# EUROPEAN PATENT APPLICATION

(11) **EP 1 024 448 A2**
(43) Date of publication of application: **02.08.2000**
(21) Application number: 99309562.9
(22) Date of filing: 30.11.1999
(51) Int. Cl.: G06F 17/60

(54) **E-commerce system**

(30) Priority: 28.01.1999 IL 12827399; 22.03.1999 IL 12910899
(71) Applicant: R-U-Sure Ltd., Tel Aviv 67211 (IL)
(72) Inventor: Vardi, Yossi, Tel Aviv 69693 (IL); Ventura, Eli, 60944 (IL); Hadar, Ori, Haifa 34407 (IL); Cohen, Rafi, Tel Aviv 62666 (IL); Mazor, Erez, Rishon-leZion 75309 (IL)
(74) Representative: Evens, Paul Jonathan

(57) **Abstract**

This invention discloses a method for acquiring and providing e-commerce information, the method including the following steps: (a) retrieving a first web page from a first web site, (b) retrieving a first site profile preconfigured for the web site, the site profile indicating in the web page at least one data region adapted for placement therein of text or images indicating items for sale and web links associated with the items, (c) identifying, using the site profile, a data region of the web page containing text or images indicating at least one item for sale and at least one web link associated with the item, (d) acquiring information regarding said item from a source other than the web site, and (e) providing the item information acquired in step (d).

## Description

### FIELD OF THE INVENTION

The present invention relates to network information systems in general, and particularly to methods and apparatus for acquiring and providing e-commerce information.

### BACKGROUND OF THE INVENTION

Consumers are turning increasingly toward the Internet for product information when making purchasing decisions. Individuals with access to a computer, the Internet, and a browser for viewing web pages retrieved from the World Wide Web may access web sites dedicated to electronic commerce ("e-commerce") in order to find and purchase items for sale. Since most e-commerce web sites sell directly to consumers and only offer a single price per item, price comparison tools such as web sites and search engines that allow consumers to compare prices among multiple e-commerce web sites are becoming increasingly popular. Some price comparison tools require that a user access a separate web site and actively search for a product, either by traversing web pages or by entering search parameters into a search engine and manually reviewing the search results. Other price comparison tools are provided in the form of computer software that is installed on the user's computer and provides a window into which search parameters are entered.

### SUMMARY OF THE INVENTION

The present invention seeks to provide improved methods and apparatus for acquiring an providing e-commerce information that do not require users to traverse web pages or enter search parameters into a search engine. In a preferred embodiment computer software is provided for use with a user's computer. The software detects when the user retrieves a web page from an e-commerce web site, retrieves a prepared profile of the web site with which it determines what items for sale appear in the web page, detects when the user selects one of the items, and automatically retrieves pricing and other information regarding the selected item from other e-commerce web sites and search engines.

There is thus provided in accordance with a preferred embodiment of the present invention a method for acquiring and providing e-commerce information, the method including (a) retrieving a first web page from a first web site, (b) retrieving a first site profile preconfigured for the web site, the site profile indicating in the web page at least one data region adapted for placement therein of text or images indicating items for sale and web links associated with the items, (c) identifying, using the site profile, a data region of the web page containing text or images indicating at least one item for sale, (d) acquiring information regarding the item from a source other than the web site, and (e) providing the item information acquired in step (d).

Further in accordance with a preferred embodiment of the present invention the acquiring step (d) includes acquiring in response to the item being selected.

Additionally in accordance with a preferred embodiment of the present invention the source is a search engine and the acquiring step (d) includes (f) querying the search engine for the item information, and (g) parsing a response from the search engine using a second site profile preconfigured for the search engine to determine the item information.

Moreover in accordance with a preferred embodiment of the present invention the acquiring step (d) includes maintaining the item in at least one watch list, and periodically acquiring the item information.

Further in accordance with a preferred embodiment of the present invention the acquiring step (d) includes maintaining the item in at least one watch list, and acquiring the item information upon the detection of a change in the item information.

Still further in accordance with a preferred embodiment of the present invention the change is any of a change in the price of the item, creation of a new review of the item, and a change in inventory information.

Additionally in accordance with a preferred embodiment of the present invention the acquiring step (d) includes maintaining the item in at least one watch list, and indicating to a user how many watch lists currently include the item.

Moreover in accordance with a preferred embodiment of the present invention the acquiring step (d) includes maintaining the item in at least one watch list, and indicating to a user how many watch lists previously included the item.

Further in accordance with a preferred embodiment of the present invention the acquiring step (d) includes indicating to a user how many times the item has previously been searched.

Still further in accordance with a preferred embodiment of the present invention the providing step (e) includes providing the item information on a computer display.

Additionally in accordance with a preferred embodiment of the present invention the identifying step (c) includes identifying a plurality of the items for sale, the acquiring step (d) includes acquiring information regarding the plurality of items from a source other than the web site, and the providing step (e) includes providing the item information regarding the plurality of items in accordance with predetermined criteria.

It is noted that throughout the specification and claims the term "user" as it is used with respect to the use of a computer may refer to a human or surrogate therefor in combination with the computer with which the human or surrogate interacts. Thus, unless otherwise specified, a reference to a user may connote a reference to the user's computer, and a reference to a user's computer may connote a reference to the user.

### BRIEF DESCRIPTION OF THE DRAWINGS

The present invention will be understood and appreciated more fully from the following detailed description, taken in conjunction with the drawings in which:
Fig. 1 is a simplified pictorial illustration of a system for acquiring and providing e-commerce information, the system constructed and operative in accordance with a preferred embodiment of the present invention;
Figs. 2A and 2B, taken together, are simplified flowchart illustrations of a preferred method of operation of the system of Fig. 1;
Fig. 3 is a simplified pictorial illustration of collated item information and display thereof, constructed and operative in accordance with a preferred embodiment of the present invention;
Fig. 4 is a simplified pictorial illustration of a web page, the web page source code, and a corresponding site profile, constructed and operative in accordance with a preferred embodiment of the present invention;
Fig. 5 is a simplified pictorial flow illustration of a preferred method of web page parsing useful in support of the method of Figs. 2A and 2B;
Fig. 6 is a simplified pictorial illustration of a watch list for use with system 10 of Fig. 1, constructed and operative in accordance with a preferred embodiment of the present invention;
Fig. 7 is a simplified pictorial illustration of a shopping cart comparison list useful in the system of Fig. 1; and
Fig. 8 is a simplified illustration of the operation of a genie in accordance with a preferred embodiment of the present invention.

Reference is also made to Appendix A, which presents a software object code, in hexadecimal form, together with installation instructions therefor, for implementing a preferred embodiment of the invention.

### DETAILED DESCRIPTION OF PREFERRED EMBODIMENTS

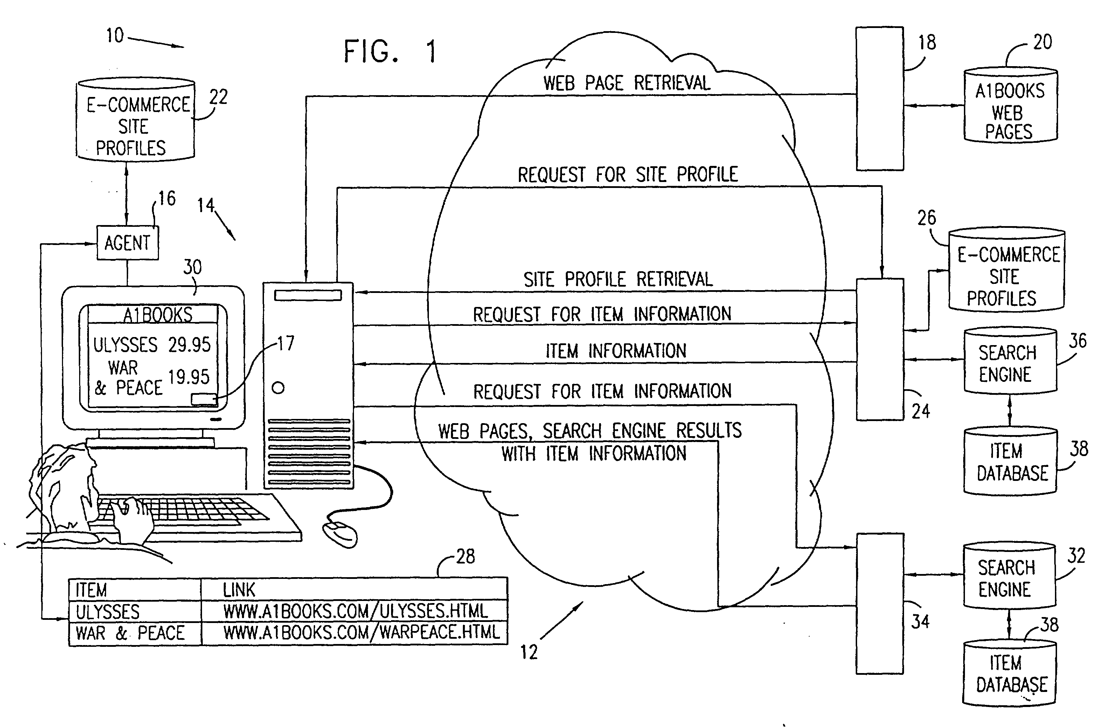

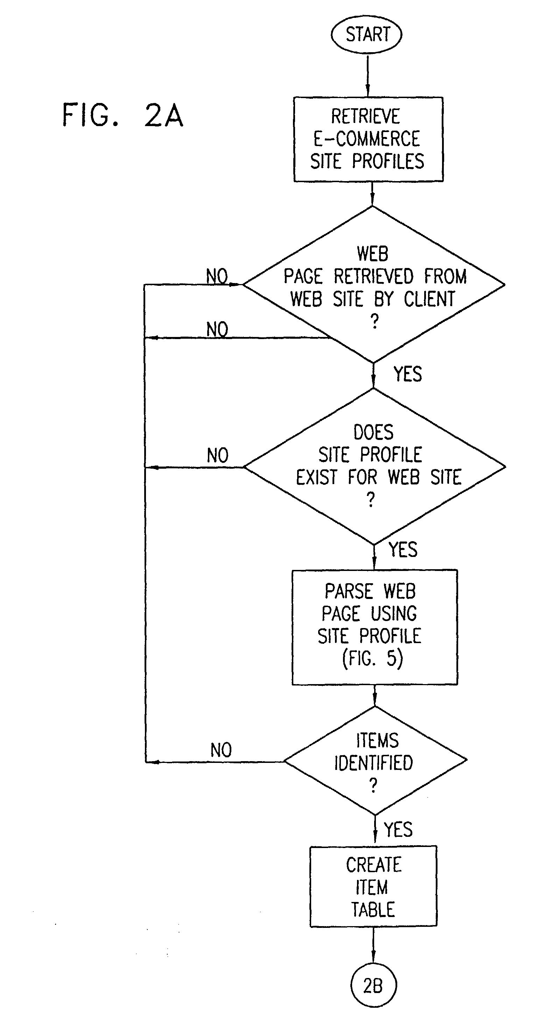

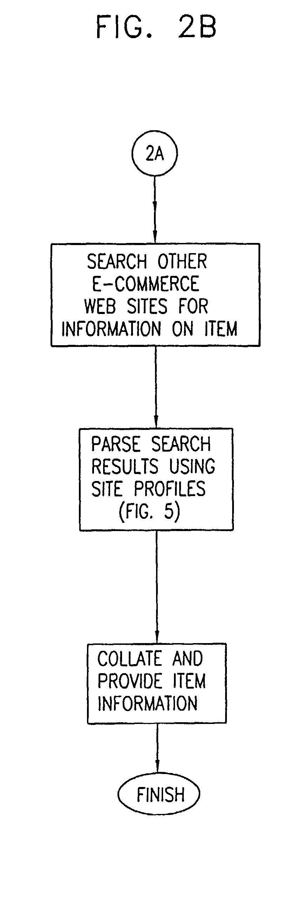

Reference is now made to Fig. 1 which is a simplified pictorial illustration of a system 10 for acquiring and providing e-commerce information in accordance with a preferred embodiment of the present invention, and to Figs. 2A and 2B which, taken together, are simplified flowchart illustrations of a preferred method of operation of the system of Fig. 1. System 10 preferably includes a communications network 12, such as the Internet.

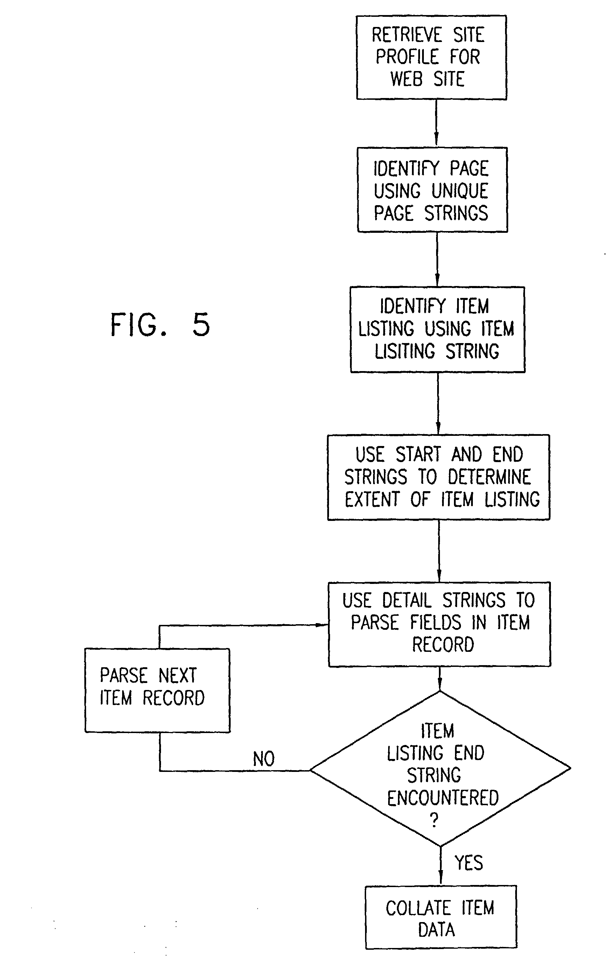

A client 14 is shown connected to communications network 12 and typically comprises any known computer terminal configured for communication via network 12, as well as a browser for viewing web pages retrieved from the World Wide Web as is well known. Client 14 is preferably configured with an agent 16 for implementing aspects of the method of Figs. 2A, 2B, and 5 described hereinbelow, agent 16 being comprised of software and/or hardware using known techniques.

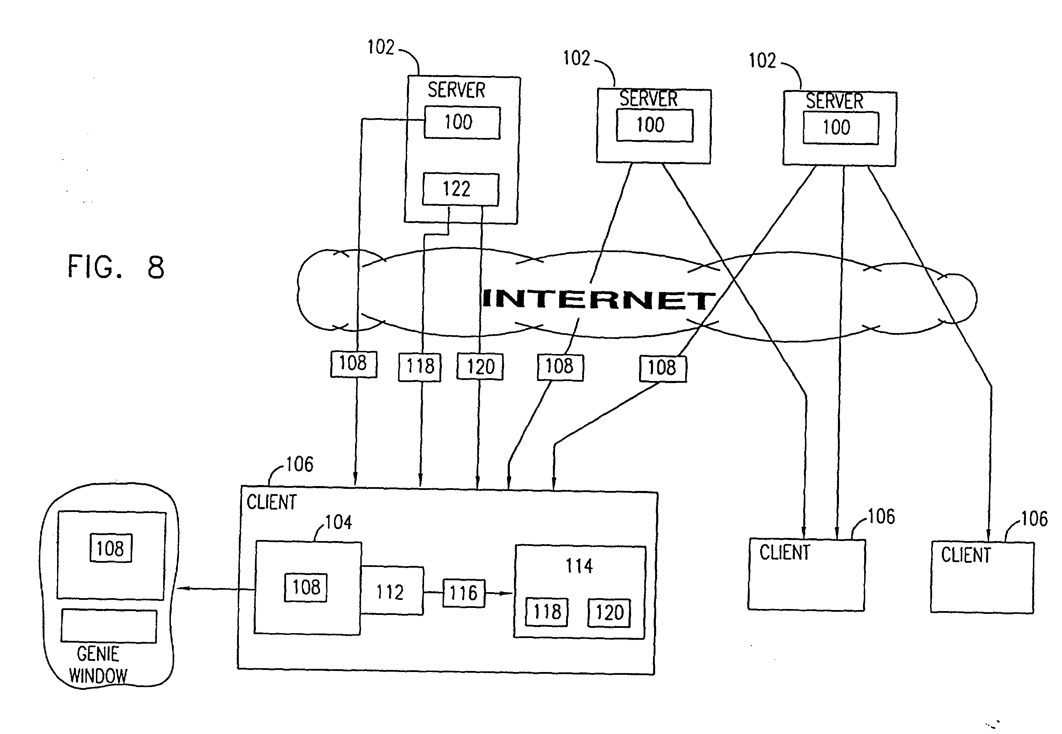

In accordance with a preferred embodiment of the invention, client 16 is also preferably configured with a genie 17 which is operative to analyze the content of web pages during viewing thereof by the user. The functionality of the client 16 is described hereinbelow with reference to Fig. 8.

Typical operation of system 10 begins with client retrieving a web page 30 from a web site, such as the "A1Books" web site stored on a server 18, with the site's web pages stored in a storage area 20. Agent 16 preferably monitors the web sites accessed by client 14 and checks a local site profile storage area 22 to determine whether a site profile exists in local storage for the web site accessed. Agent 16 preferably periodically retrieves site profiles from a server 24, such as each time agent 16 is activated. Server 24 preferably maintains site profiles of e-commerce sites in a storage area 26.

If a site profile for the web site is found, agent 16 preferably retrieves the same web page retrieved by client 14 from server 18 or from cache and parses the web page using the site profile to identify items for sale listed in the web page. Agent 16 preferably creates an item table 28 listing the items found and their associated web links. A preferred method of parsing a web page using a site profile is described hereinbelow with reference to Fig. 5.

It is a particular feature of the present invention that agent 16 detects when a user selects an item. In response, agent 16 typically queries search engines of other e-commerce sites whose site profiles are known to agent 16, such as a search engine 32 of a server 34, and/or a search engine 36 of server 24 for information regarding the item previously collected in an item database 38, in order to acquire information regarding the item selected by the user.

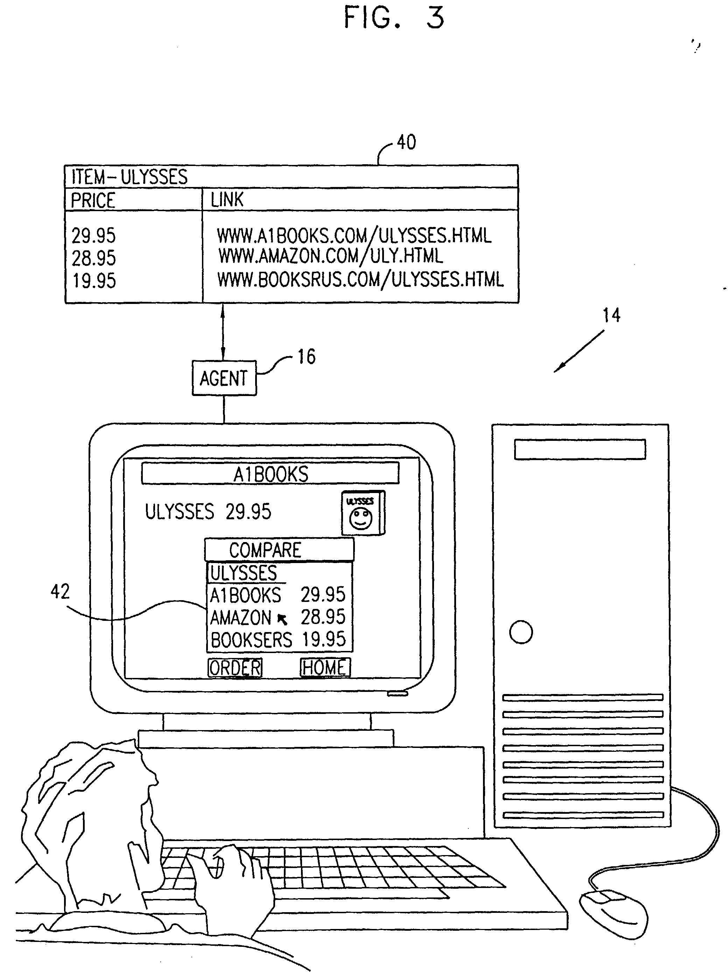

Such information may include price, professional or consumer product reviews, inventory information, and other information commonly available on e-commerce web sites. Agent 16 then preferably parses the results, typically received in the form of a dynamically-generated web page, using the site profiles and collates the information regarding the item selected in a item comparison table 40, shown with additional reference to Fig. 3. Agent 16 preferably provides the collated information via client 14 using any suitable technique known in the art, including via a window 42 which itself may include links to alternate web sites offering the same item for sale.

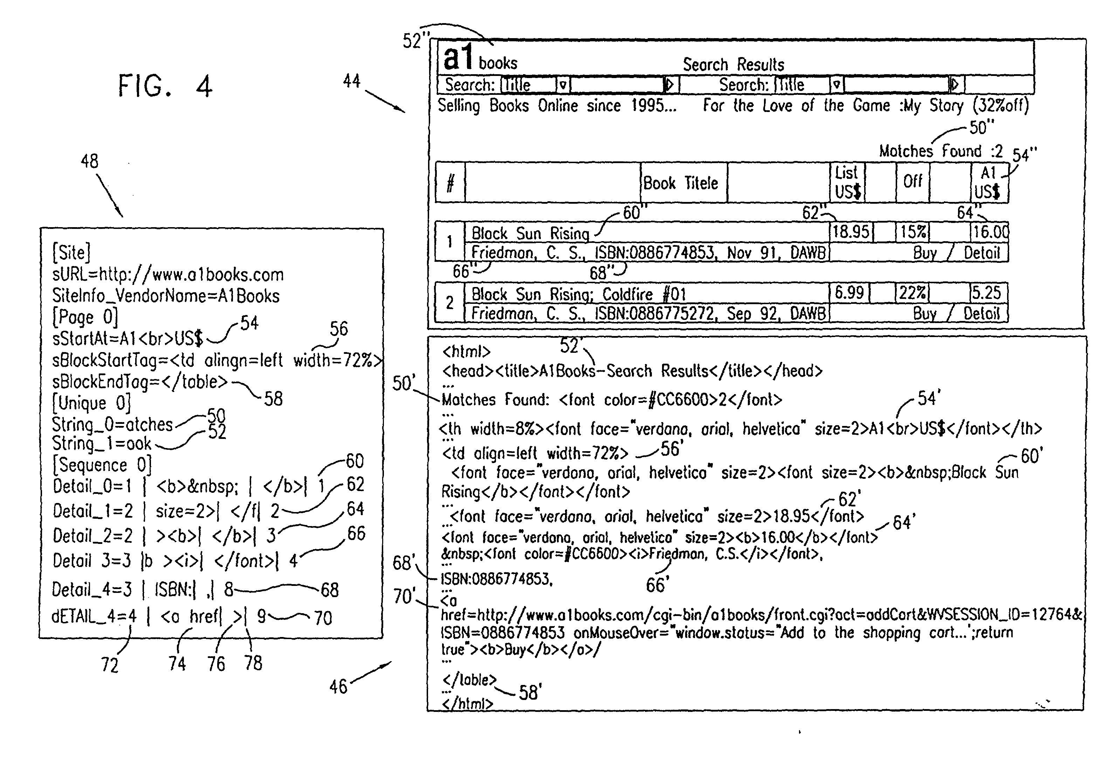

Reference is now made to Fig. 4 which is a simplified pictorial illustration of a web page, a web page source listing, and a corresponding site profile, and Fig. 5 which is a simplified flowchart illustration of a preferred method of web page parsing useful in support of the method of Figs. 2A and 2B, constructed and operative in accordance with a preferred embodiment of the present invention. Shown in Fig. 4 are a web page 44, a web page source listing 46 of web page 44, and a site profile 48 corresponding to the web site from which web page 44 was retrieved, for example "www.a1books.com".

Once the site listing for the web site has been retrieved, parsing typically begins with listing 46 being searched for one or more strings which uniquely distinguish web pages containing items for sale. In the illustration shown, unique page strings 50 and 52 of profile 48, namely "atches" and "ook", are found in listing 46 at 50' and 52', and correspond to respectively to 50" and 52" of web page 44. Once the web page has been identified as containing an item for sale, listing 46 is searched for an item containing string 54, namely "A1<br>US$" shown at 54' and 54", which indicates the beginning of an item listing. The start and end of the item listing may then be found using start and end strings 56 and 58, found at 56' and 58'.

The item records between the start and end strings 56' and 58' may then be parsed using one or more detail strings 60, 62, 64, 66, 68, and 70 to denote specific fields within each item record. Each detail string typically includes a type identifier 72 indicating the field type, such as book title or author, a field start string 74, and a field end string 76, each separated by a delimiter 78. Detail strings 60, 62, 64, 66, 68, and 70 are shown in listing 46 at 60', 62', 64', 66', 68', and 70', and in web page 44 (except for 70) at 60", 62", 64", 66", and 68". Parsing preferably continues for each item record encountered until the end string 58 is encountered, with the results typically being collated in item comparison table 40 and presented as in window 42 (Fig. 3).

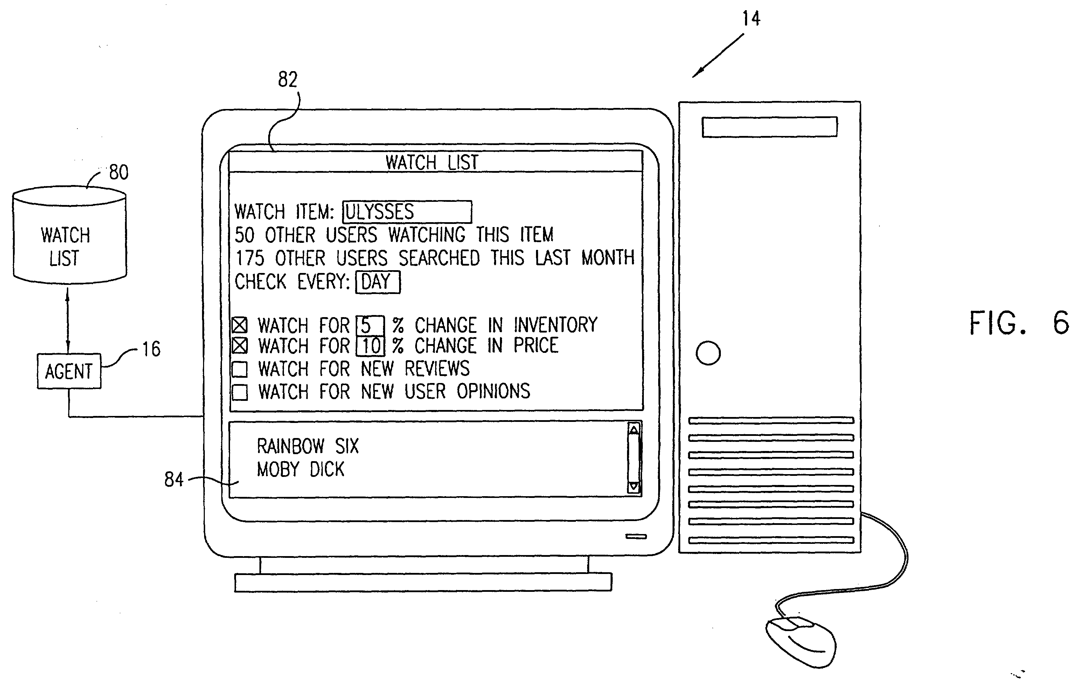

Reference is now made to Fig. 6 which is a simplified pictorial illustration of a watch list for use with system 10 of Fig. 1, constructed and operative in accordance with a preferred embodiment of the present invention. In the embodiment shown a watch list 80 is preferably maintained by agent 16, with items entered via a watch list window 82. Agent 16 preferably periodically searches e-commerce web sites in the manner described hereinabove for information regarding items entered into watch list 80.

Watch list window 82 may report on a number of other individuals in whose watch lists an item also appears, as well as a number of individuals who searched for a specific item in the past, such as the past month. Watch list 80 may be configured to provide an alert message when a percent or absolute change in price or inventory is detected, or when new published reviews or user reviews become available. Multiple items may be watched as is shown at reference numeral 84.

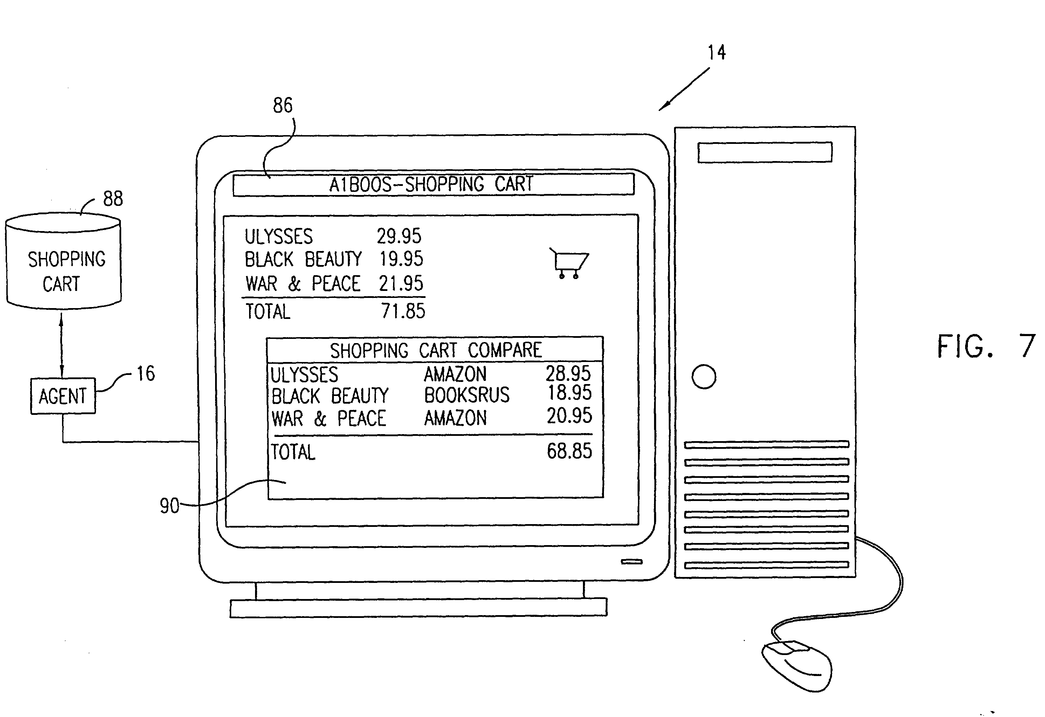

Reference is now made to Fig. 7 which is a simplified pictorial illustration of a shopping cart comparison list for use with system 10 of Fig. 1, constructed and operative in accordance with a preferred embodiment of the present invention. In the embodiment shown parsing techniques described hereinabove may be used to identify a web page 86 as being a shopping cart web page listing multiple items. Agent 16 preferably searches for the items listed on other e-commerce sites and compiles an alternative shopping cart 88 based on predetermined criteria, such as lowest price or availability from preferred e-commerce sites. Information from cart 88 may then be presented in a shopping cart comparison list 90.

Reference is now made to Fig. 8, which is a simplified illustration of the operation of a genie 17 (Fig. 1) in accordance with a preferred embodiment of the present invention. Throughout this specification the term "genie" is used to denote software that supplements a web browser and provides a user with information supplemental to the information that is displayed by the web browser.

For example, if the web browser is displaying to a user information about goods, such as sweaters, that can be purchased on-line from a particular clothing store, a genie may provide supplemental information such as prices of similar sweaters that can be purchased on-line from other clothing stores. As another example, if a web browser is displaying to a user information about services, such as educational services offered by a particular service provider, a genie may provide supplemental information such as prices of similar educational services offered by another service provider.

As illustrated in Fig. 8, web server software 100 resides on server computers 102, and web browser software 104 resides on client computers 106. Client computers 106 are connected to server computers 102 by means of the Internet, or such other network of computers that enables a distributed client/server computing environment.

Web browser software 104 typically displays web pages 108, such as HTML pages or XML pages, stored on one or more server computers 102, are displayed on client computer 106. Web pages 108 are transmitted from server computer 102 to client computer 106 upon request by a user by means of a user interface of web browser software 104.

In accordance with a preferred embodiment of the present invention, client computer 106 contains genie software, part of which is genie integrated software 112 that is integrated with web browser software 104 as a plug-in, Java applet, ActiveX control, or such other software as can be operated within web browser software 104, and part of which is a genie software application 114 external to web browser software 104.

Upon receipt of web page 108 by client computer 106, and simultaneous with display of web page 108 by web browser software 104, genie integrated software 112 fetches a document source 116 from web page 108, which is accessible from within web browser software 104 (having been received from server computer 102), and transfers it to genie application software 114. Alternatively, genie application software 114 can retrieve document source 116 from a local cache on client computer 106, such as a cache used by web browser software 104.

Genie application software 114 parses document source 116 in order to identify goods and/or services being displayed to the user on web page 108. That is, while the user is viewing the contents of web page 108, genie application software 114 identifies the goods and/or services that the user is looking at.

It is noted that the user does not have to activate genie application software 114 directly, each time he is viewing a web page. Rather, once the user instantiates genie application software 114, genie application software 114 automatically locks in on the information in the web page 108 that the user is viewing. This is enabled by transfer of document source 116 from within web browser software 104 to genie application software 114.

In accordance with a preferred embodiment of the present invention, genie application software 114 queries the user, by means of a dialogue box or such other dialogue form, as to which of the identified goods and/or services are of interest to him.

It should be apparent to those skilled in the art that if only one good or service has been identified by genie application software 114, it is unnecessary to conduct the above query.

The user responds to the query, and indicates one or more goods and/or services that he is interested in finding out about. Genie application software 114 contains a table 118 of categories for goods and services. Upon indication by the user which one or more goods and/or services are of interest to him, genie application software 114 locates one or more categories in table 118 that are appropriate for each good and/or service indicated by the user.

Table 118 stores a list of web pages associated with each category therein. Preferably the web pages associated with a particular category contain products within that category. For example, the web pages associated with a category such as sweaters contains sweaters being offered for sale by a variety of stores.

Genie application software 114 acts as a web agent, and retrieves the web pages associated with the categories in table 118 appropriate for the goods and/or services indicated by the user, from one or more servers 102 connected to the Internet. Genie application software 114 also parses the retrieved web pages to extract information for the same or similar goods and/or services as those indicated by the user to be of interest to him.

In a preferred embodiment of the present invention, the parsed information is then displayed to the user by genie application software 114, in a concise easy-to-understand format, such as a comparative table of similar goods and/or services with price and location/URL information.

Upon viewing such a table, the user can click on any specific item in the table, and web browser software 104 will display the full web page that contains the specific item.

It will be appreciated that table 118 may store web sites associated with categories in the table, rather than individual web pages. For example, under the category "camera," one such site may be Kodak's web site, http://www.kodak.com. In this case, Genie application software 114, when acting as a web agent, retrieves all of the relevant web pages belonging to such a web site, such as all of the web pages belonging to Kodak's web site, and parses them all.

Similarly, genie application 114, when acting as a web agent, may search further and retrieve all of the web pages linked to web pages or web sites listed in table 118 under a desired category, and parse them all. In this way, genie application software 114 extracts more information for the user than would be the case if it only retrieved the web pages and web sites listed in table 118 per se.

It will be appreciated by those skilled in the art that there exist many possible variations in the scope of the search conducted by genie software application 114 in its operation as a web agent, without departing from the spirit of the present invention.

In an alternate embodiment of the present invention, genie application software 114 may provide the user with information about the goods and/or services of interest to him from sources other than Internet web pages. For example, genie application software 114 may have pre-stored information 120 about the goods and/or services indicated by the user to be of interest to him.

It will be appreciated by those skilled in the art that since web pages stored on servers 102 are typically being changed or removed, and new web pages added, it is important that table 118 be maintained so as to be kept current. To this end, as a counterpart to genie software residing on client computers 106, server software 122 resides on one or more servers 102. Whenever genie application software 114 is activated by a user on client computer 106, the genie application software 114 preferably logs the user in to server software 122. Server software 122 constantly updates its version of table 118, by accumulating data found by searching the Internet.

When a user logs in to server software 122, server software 122 transmits an updated table 118 to client computer 106, to replace the current table 118 resident in client computer 106, thereby keeping client computer 106 up-to-date with the information on the Internet.

Similarly, server software 122 can also keep an up-to-date list of information about goods and/or sources from sources other than the Internet, and transmit this information to client computer 106 in order to keep pre-stored information 120 up-to-date.

It will further be appreciated by those skilled in the art that server software 122 can provide auxiliary functions in addition to the function of keeping table 118 and pre-stored information 120 current. Server software 122 can provide administrative functions, such as authenticating users whenever they want to execute genie application software 114, for purposes of access control and for informational purposes. Server software 120 has the ability to identify users who have appropriate licenses to use genie application software 114, and who have registered themselves. In addition, server software 122 has the ability to identify the web pages 108 being viewed by each registered user at any given instant of time.

Thus it may be appreciated that server software 122 can provide to a registered user information as to all other registered users who are currently viewing the same web page, or who are interested in the same goods and/or services as he is.

It is appreciated that aspects of the present invention may be implemented in computer hardware, software, or any suitable combination thereof using conventional techniques.

Software object code in hexadecimal form, together with installation instructions therefor, for implementing the present invention in accordance with a preferred embodiment thereof is appended hereto in Appendix A.

It will be appreciated by persons skilled in the art that the present invention is not limited by what has been particularly shown and described hereinabove. Rather the scope of the present invention includes both combinations and subcombinations of the features described hereinabove as well as modifications and variations thereof which would occur to a person of skill in the art upon reading the foregoing description and which are not in the prior art.

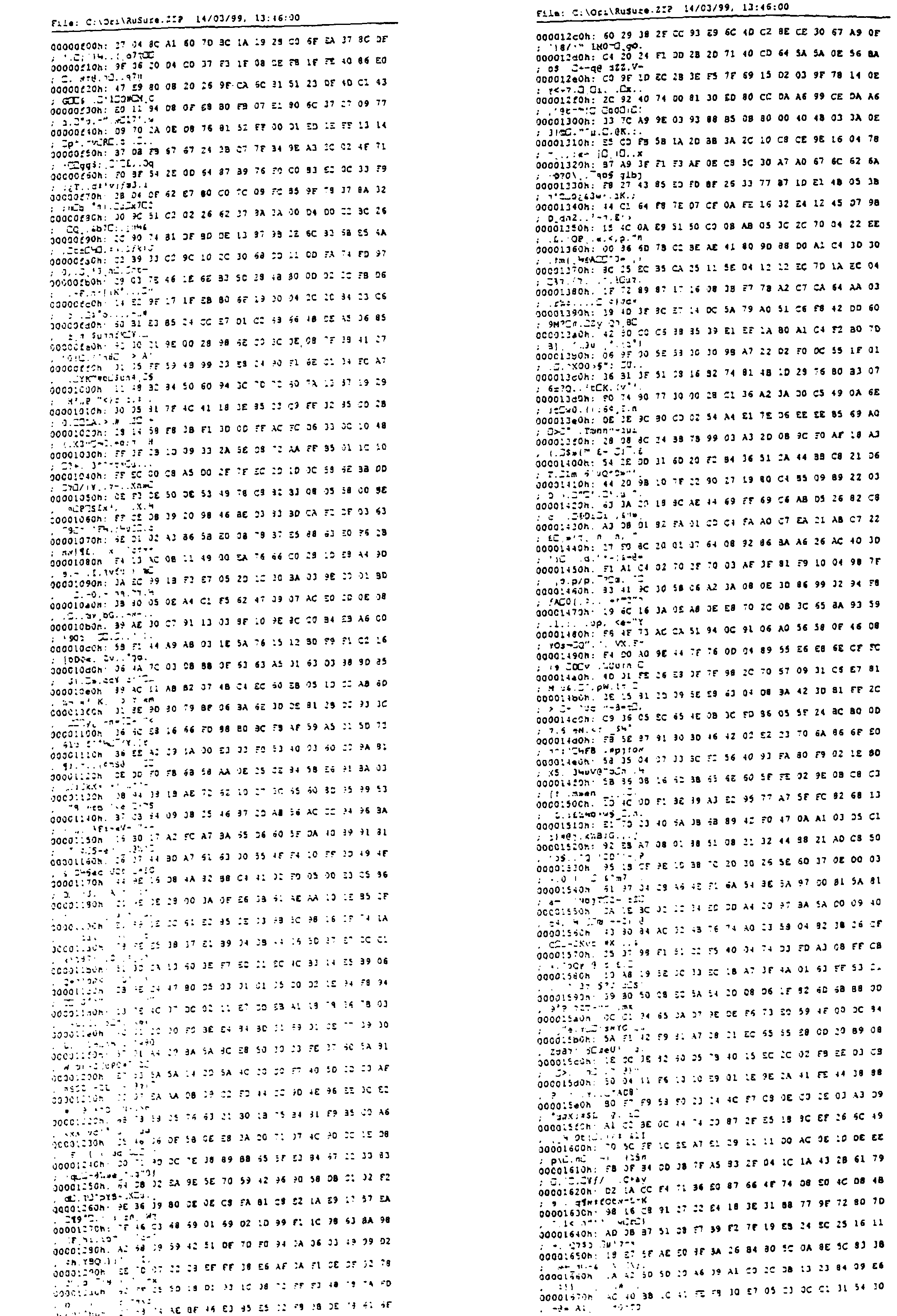

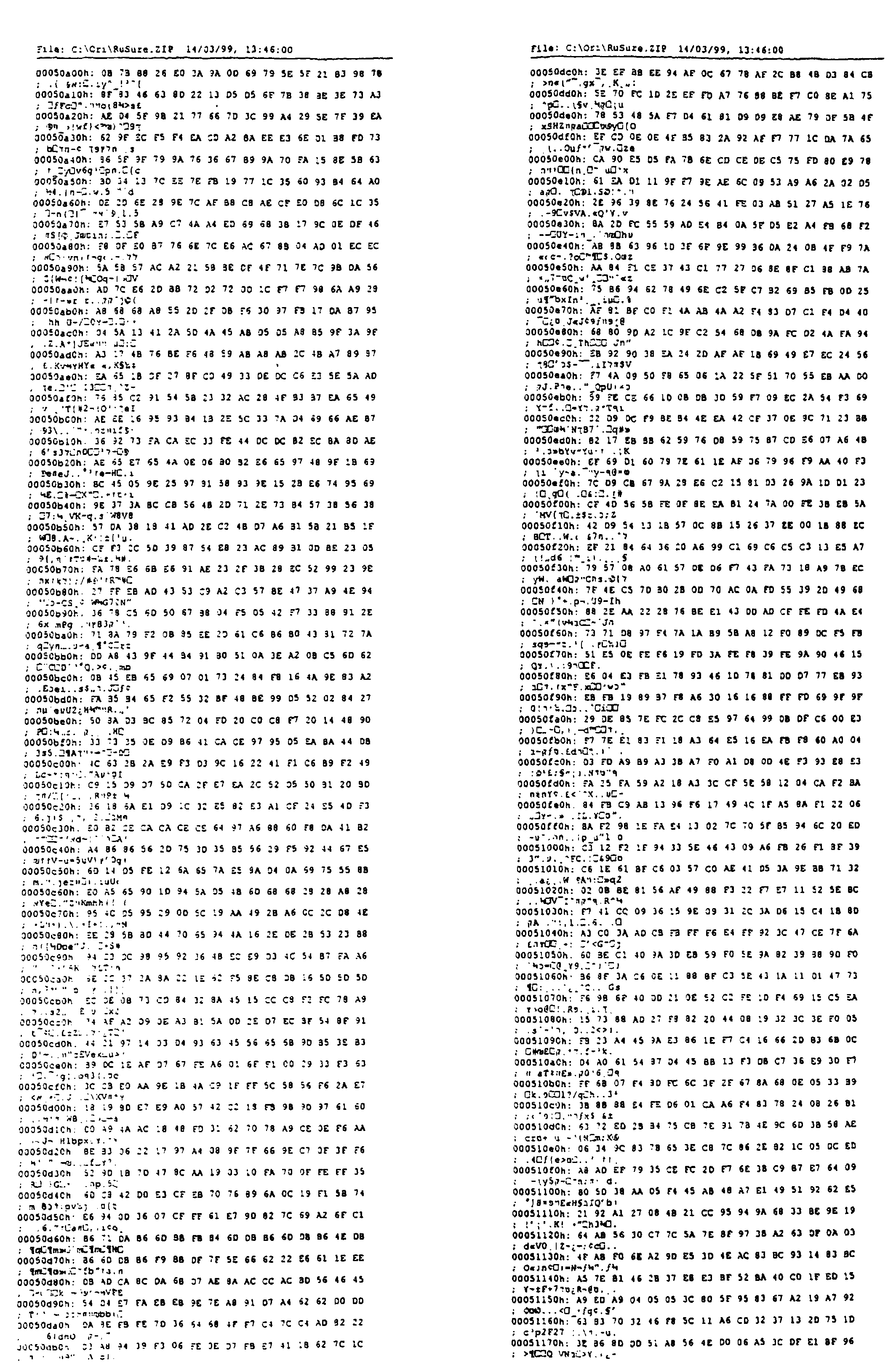

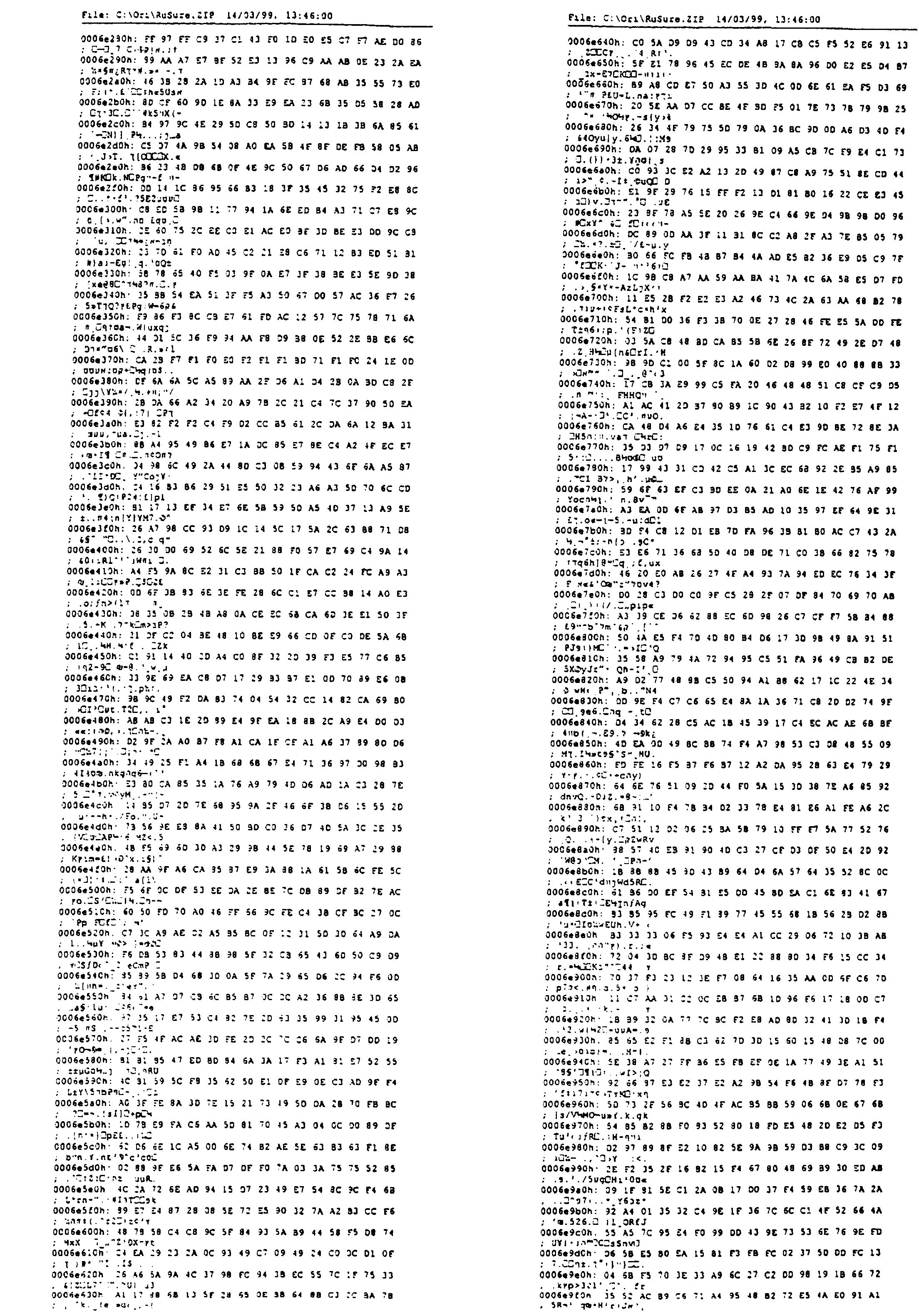

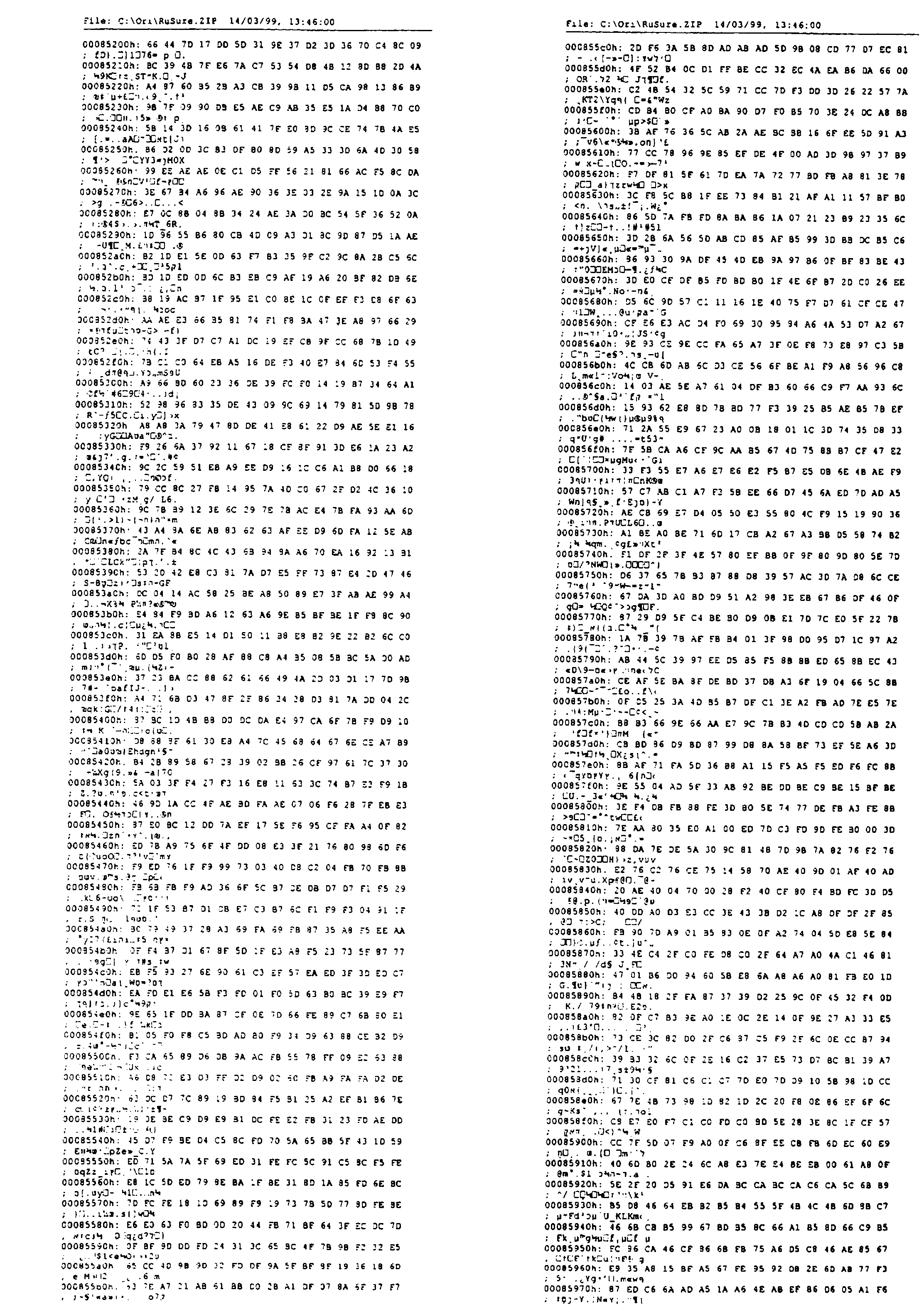

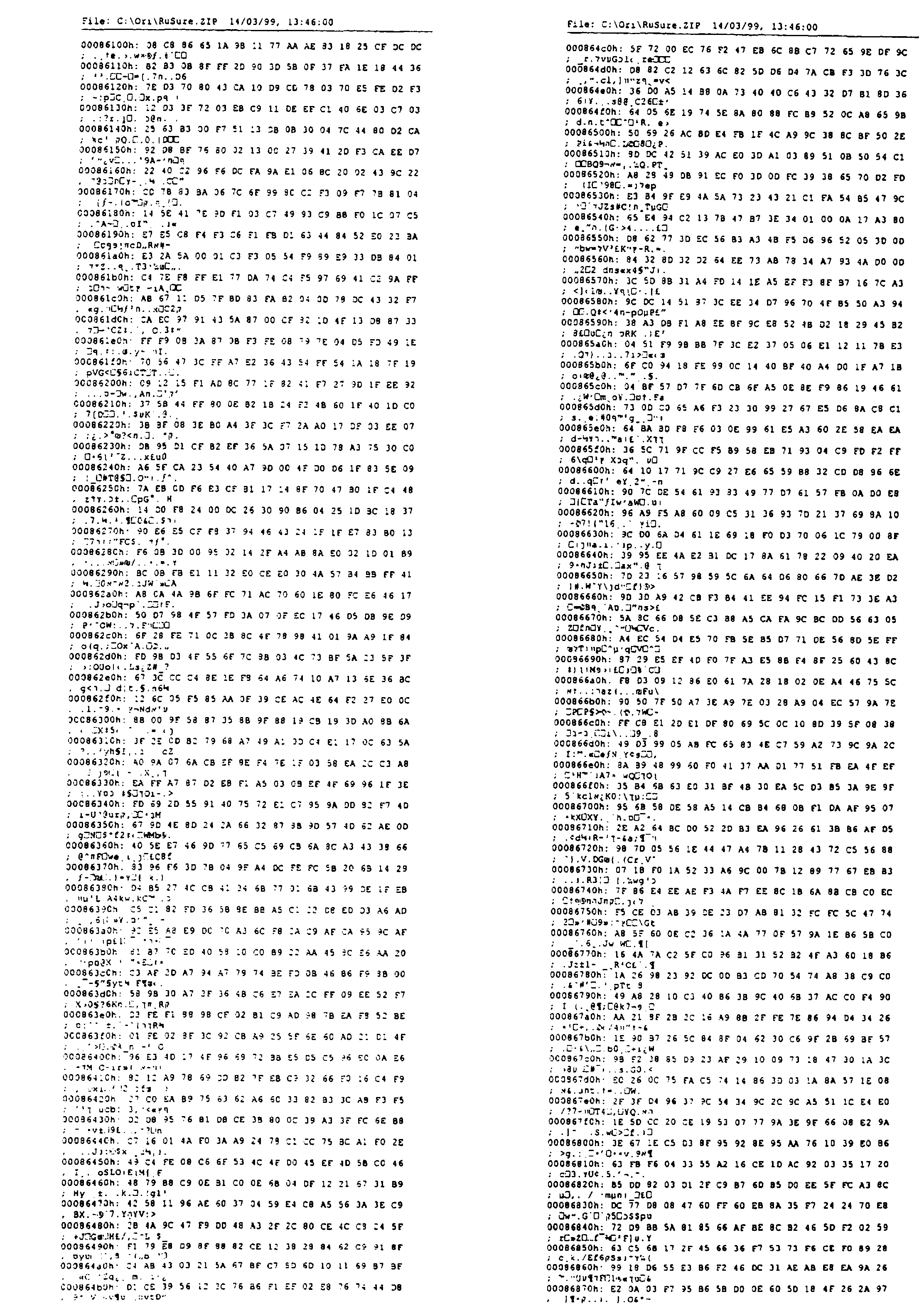

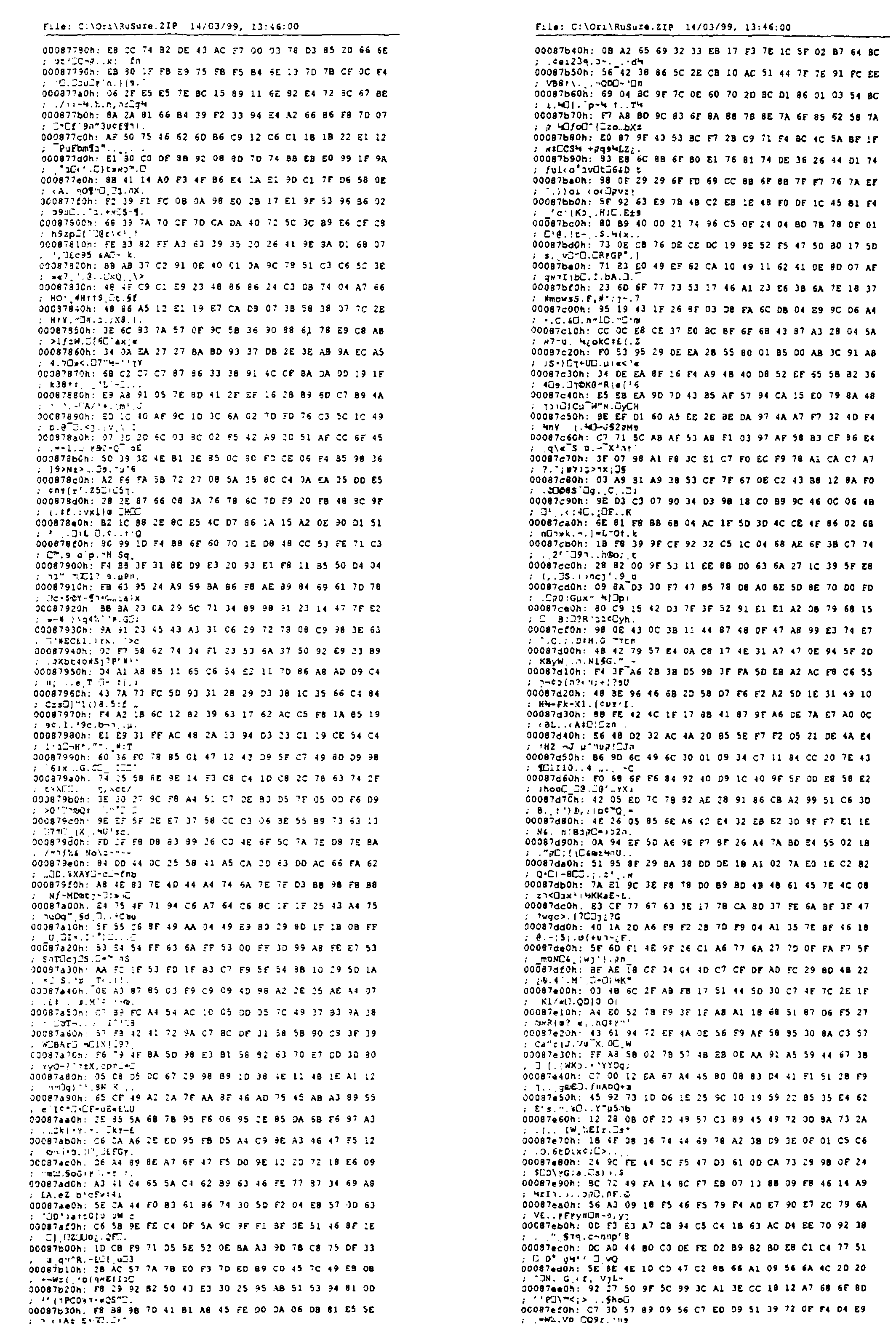

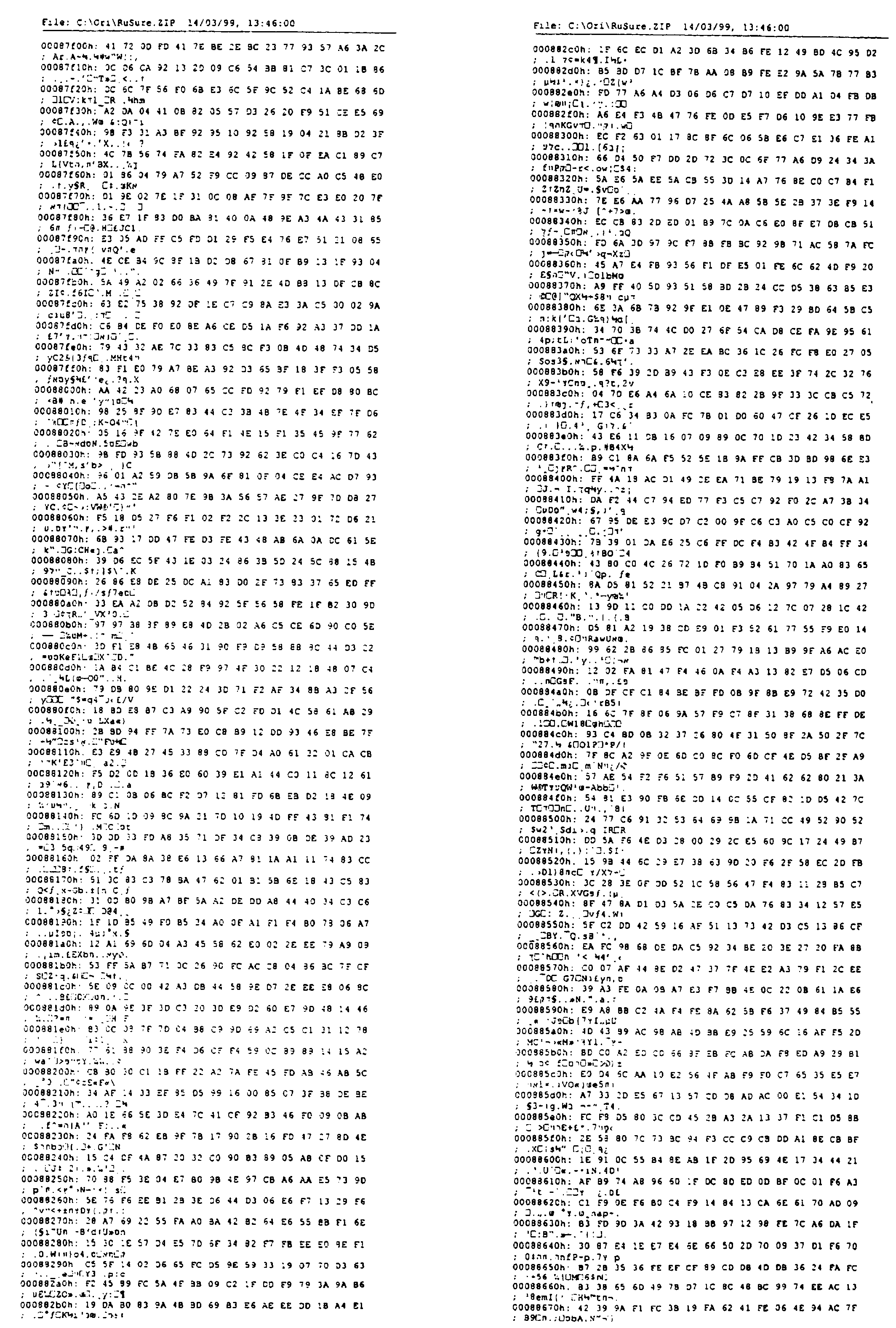

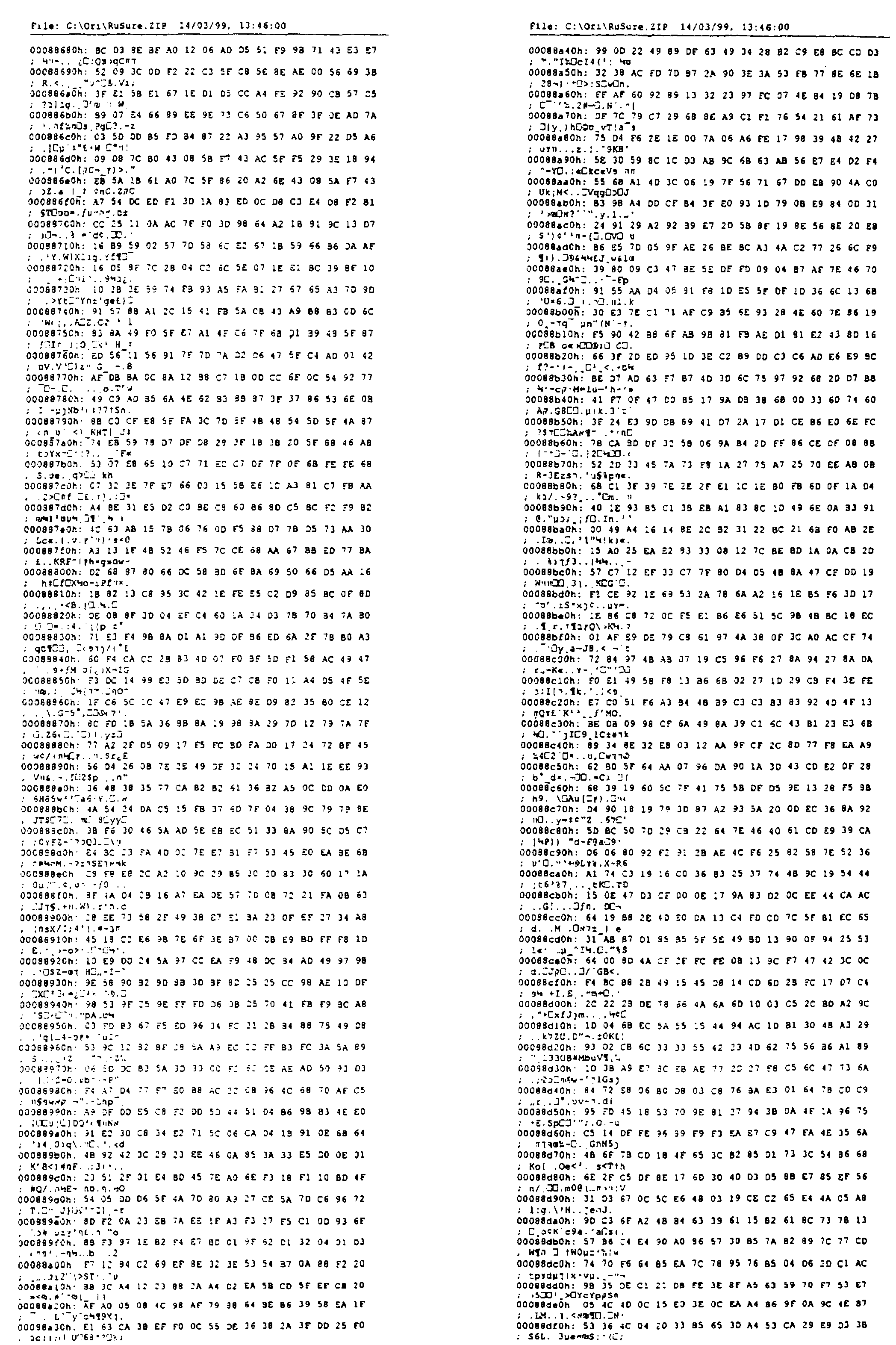

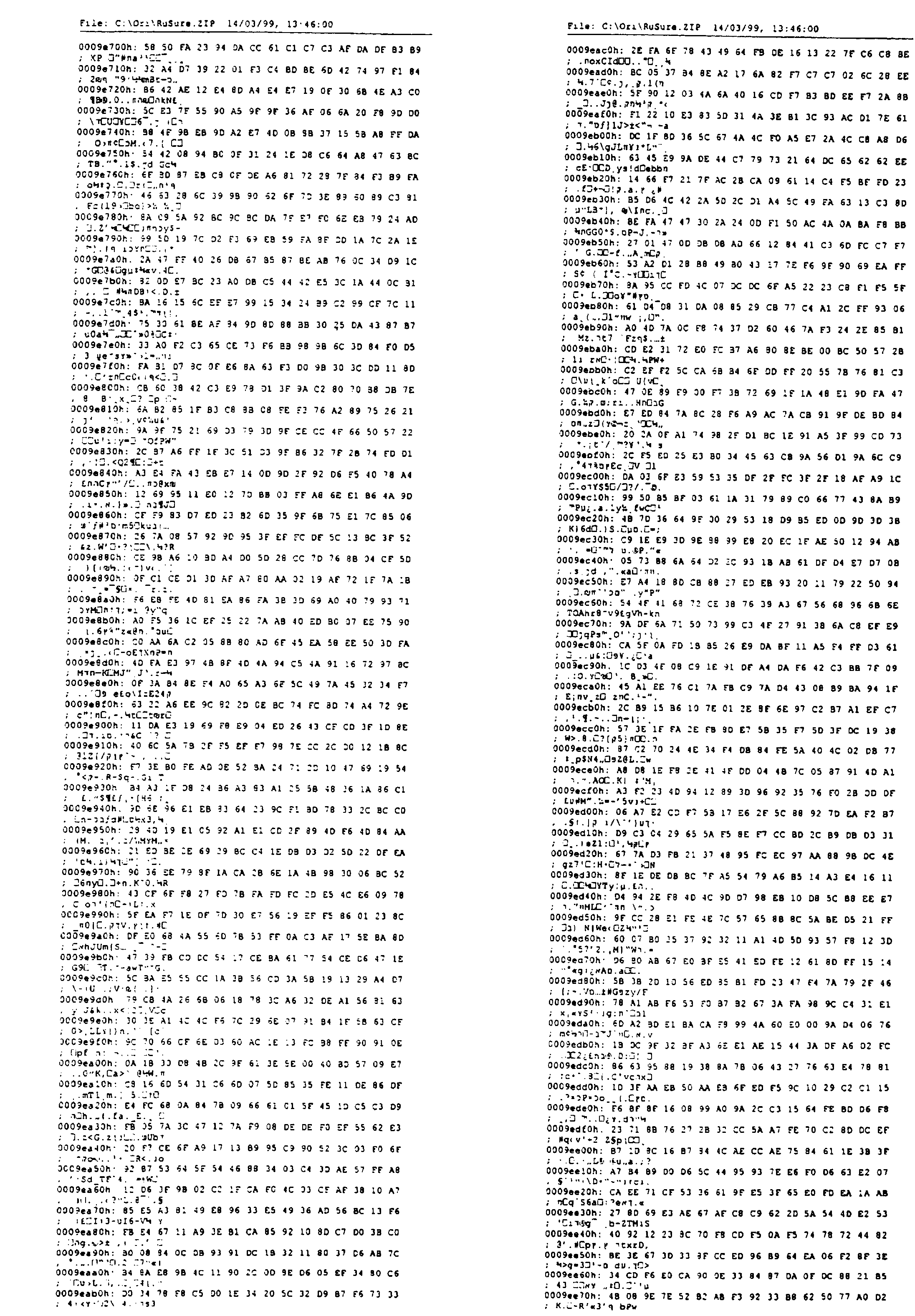

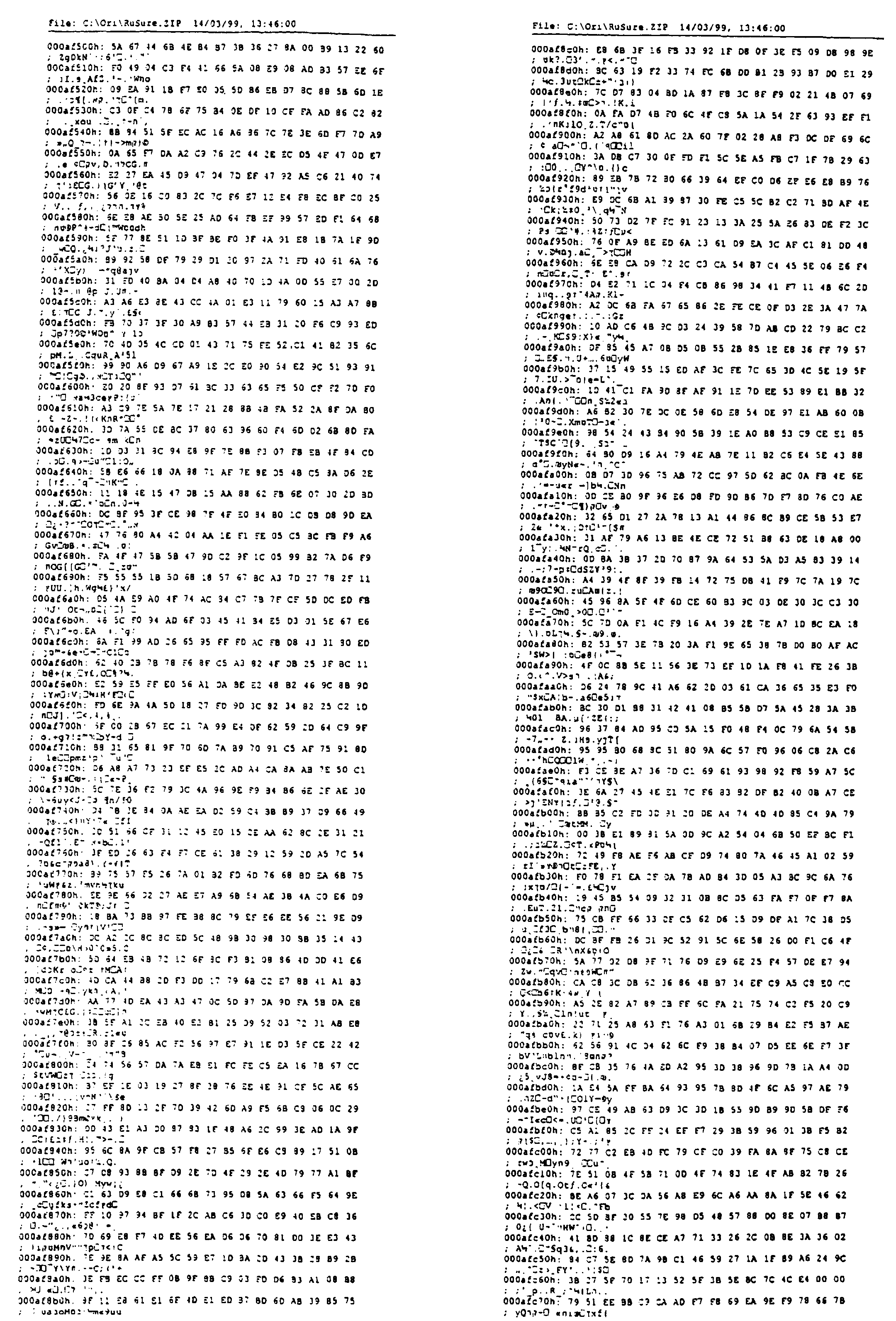

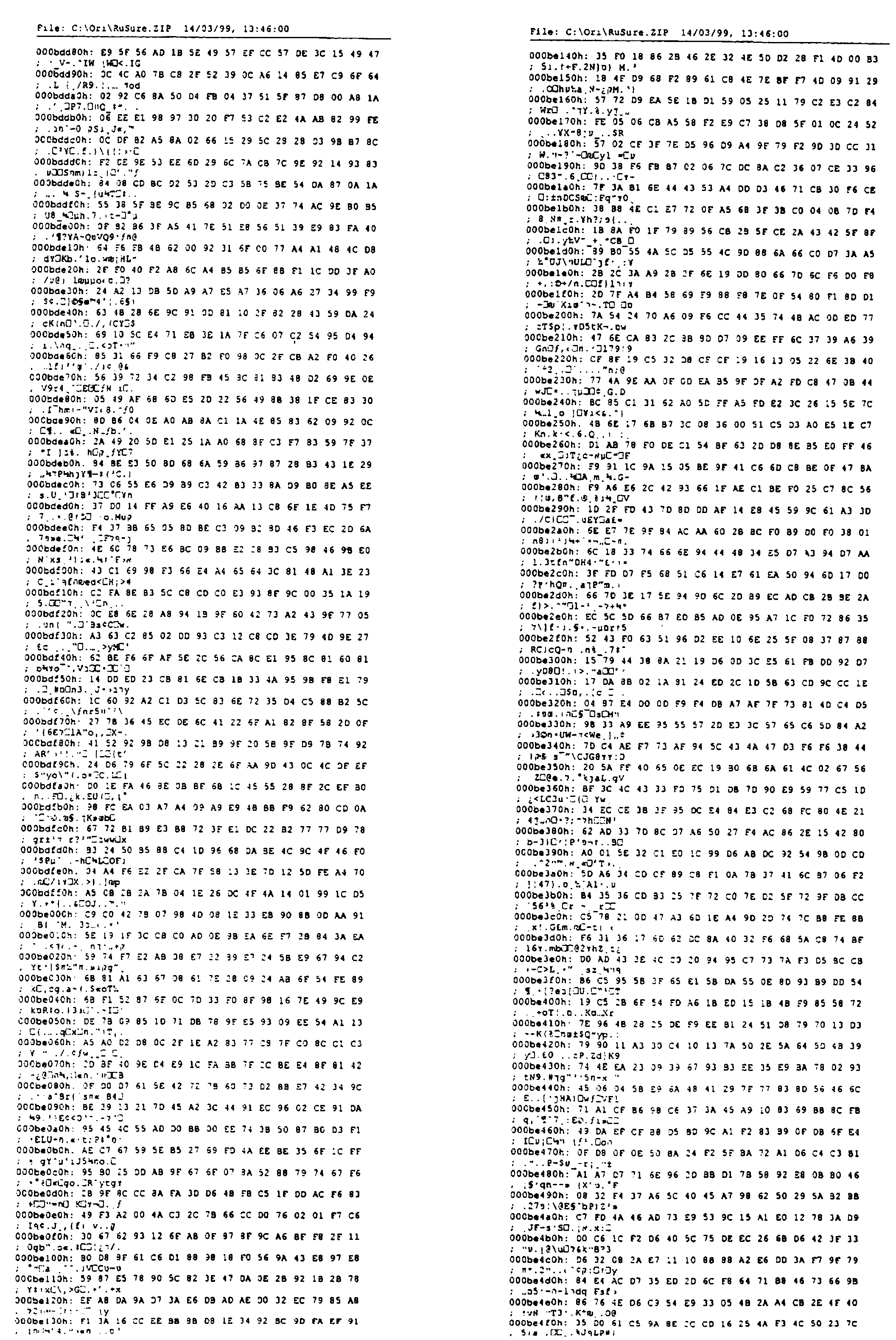

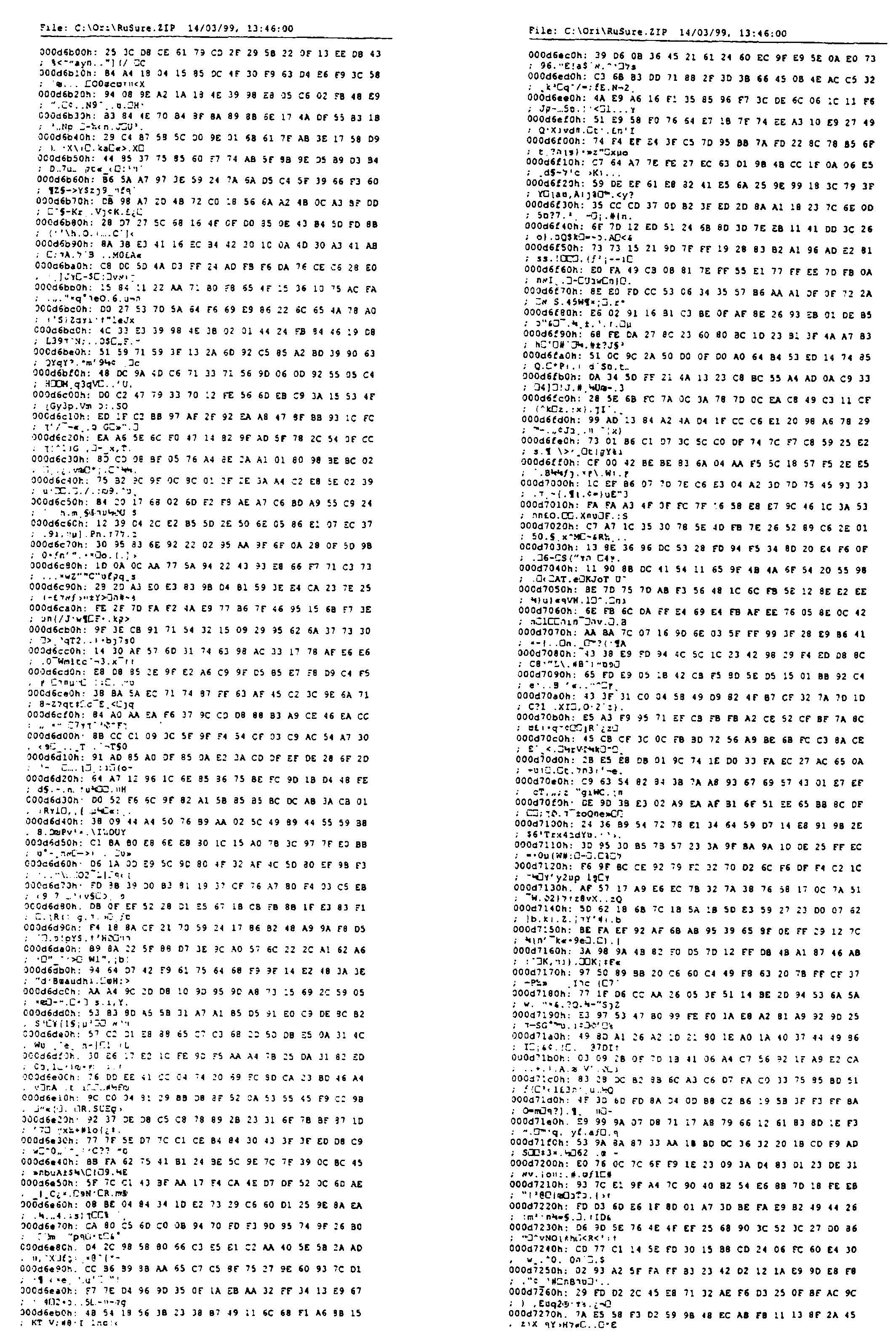

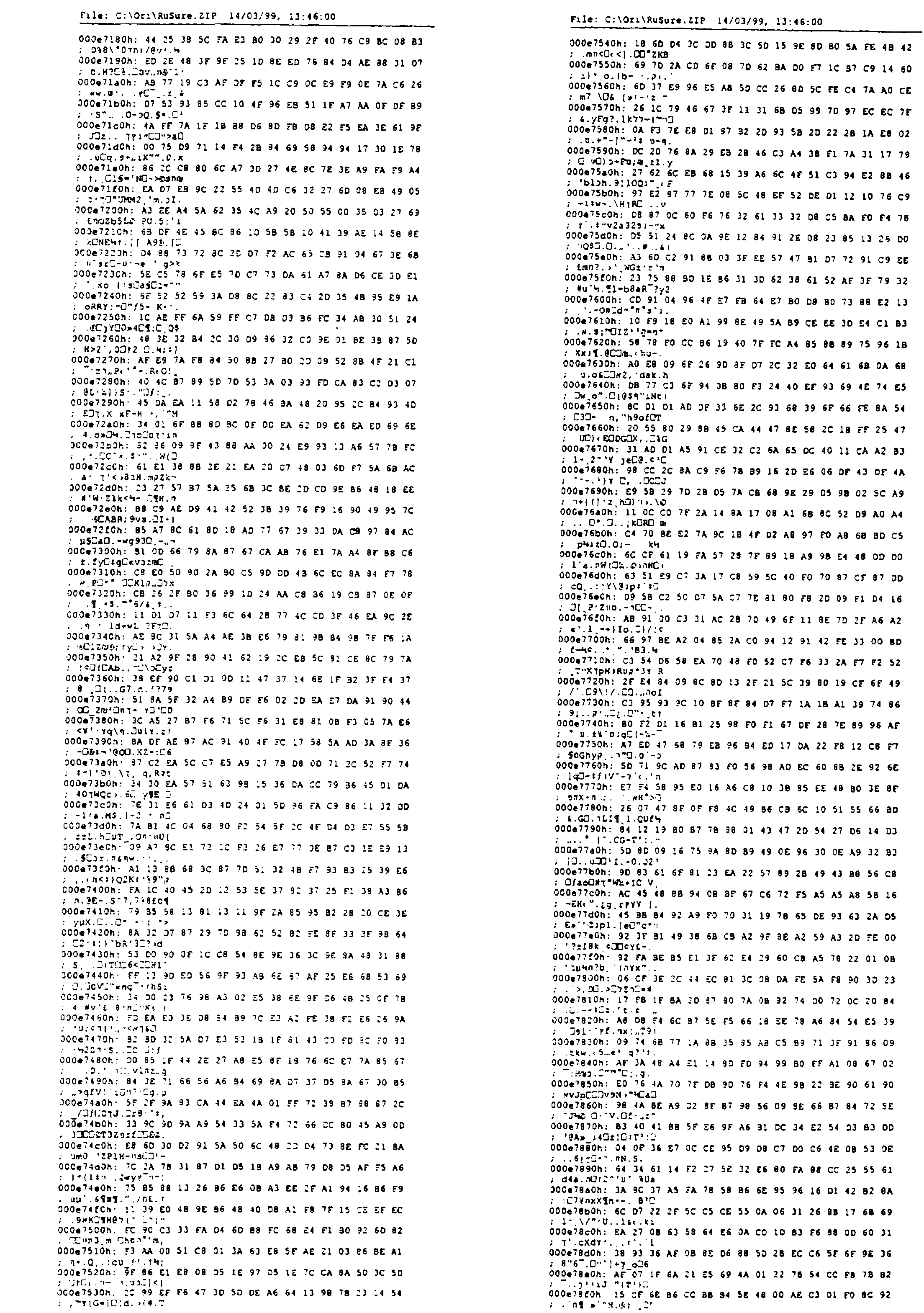

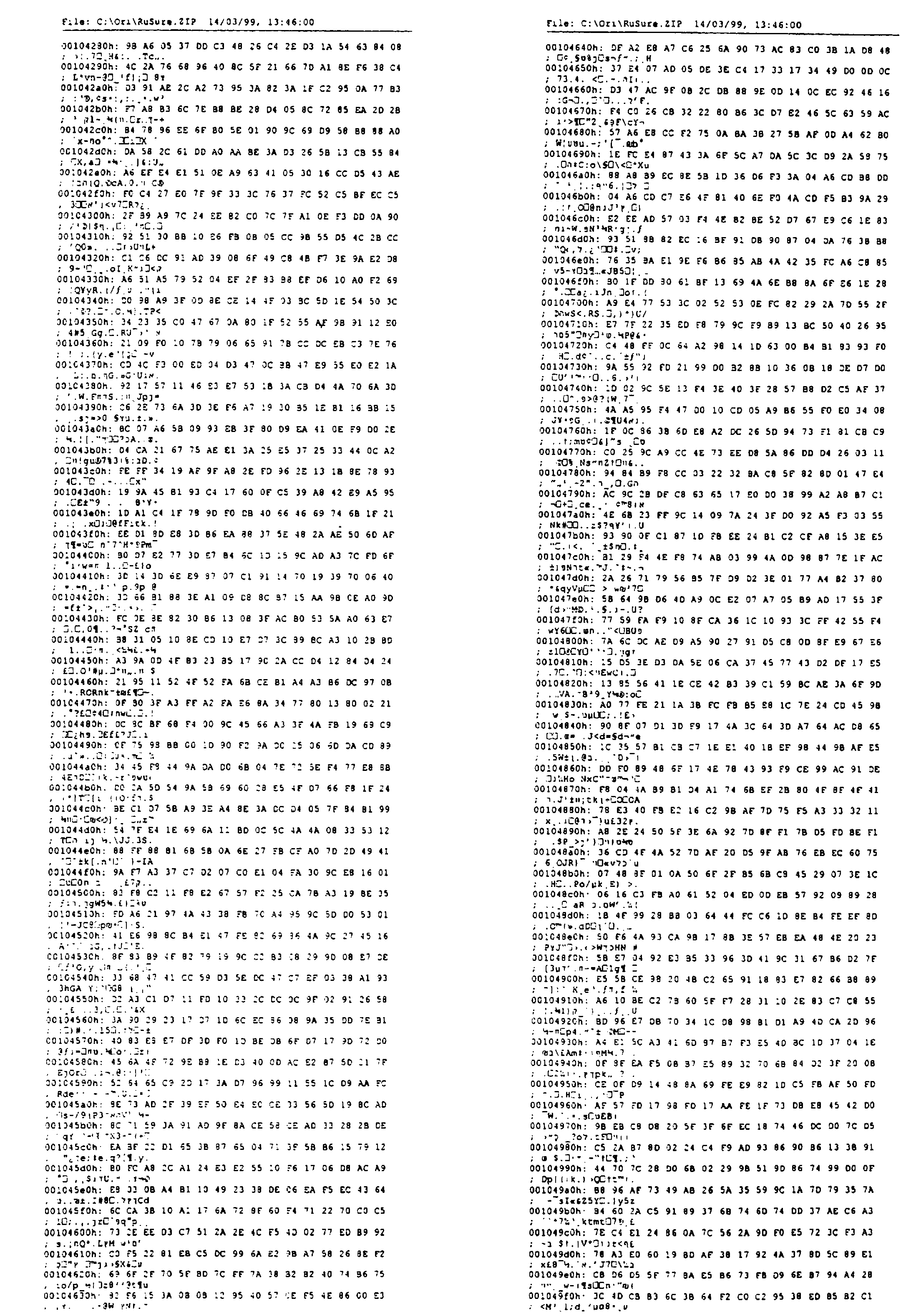

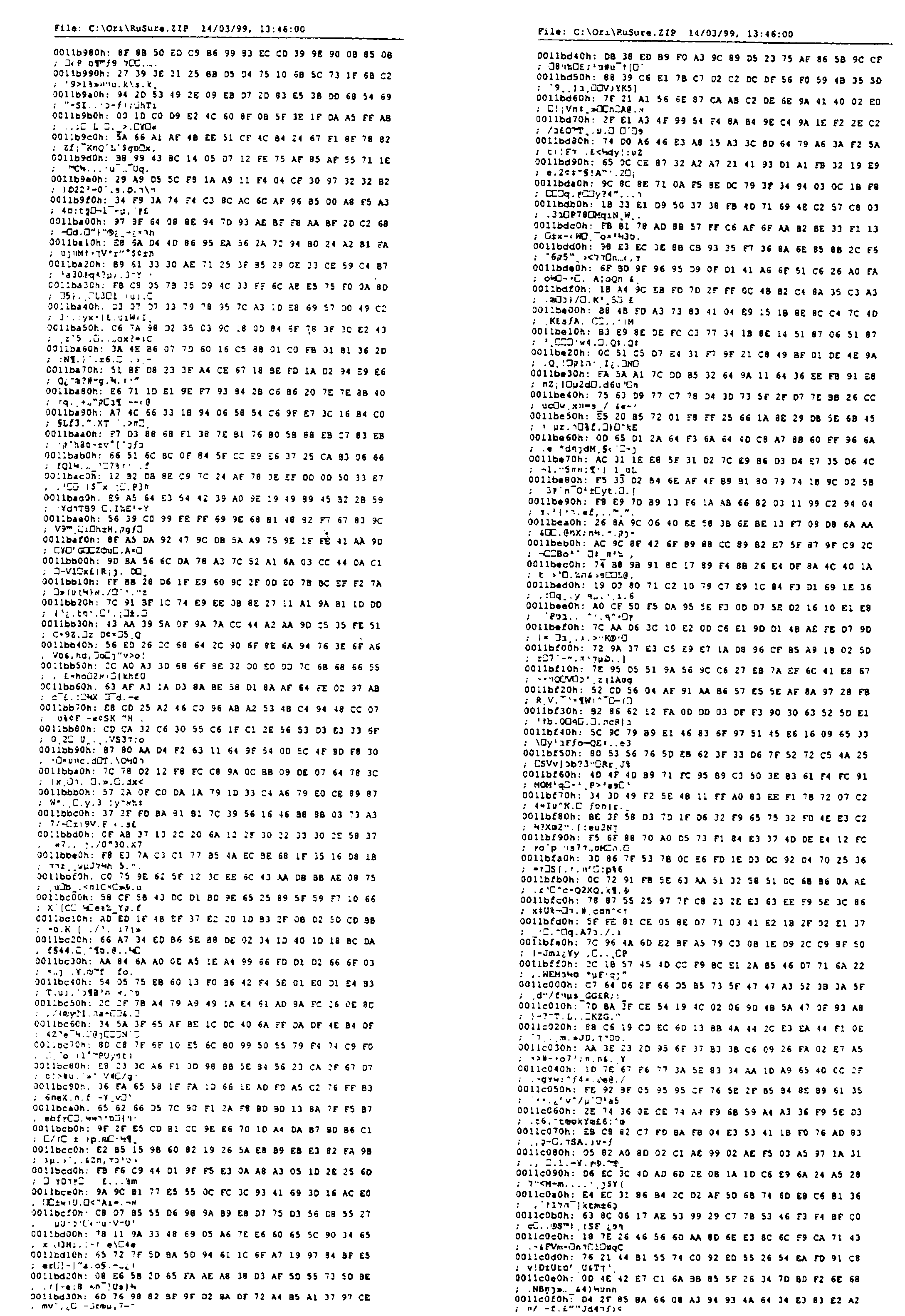

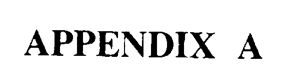

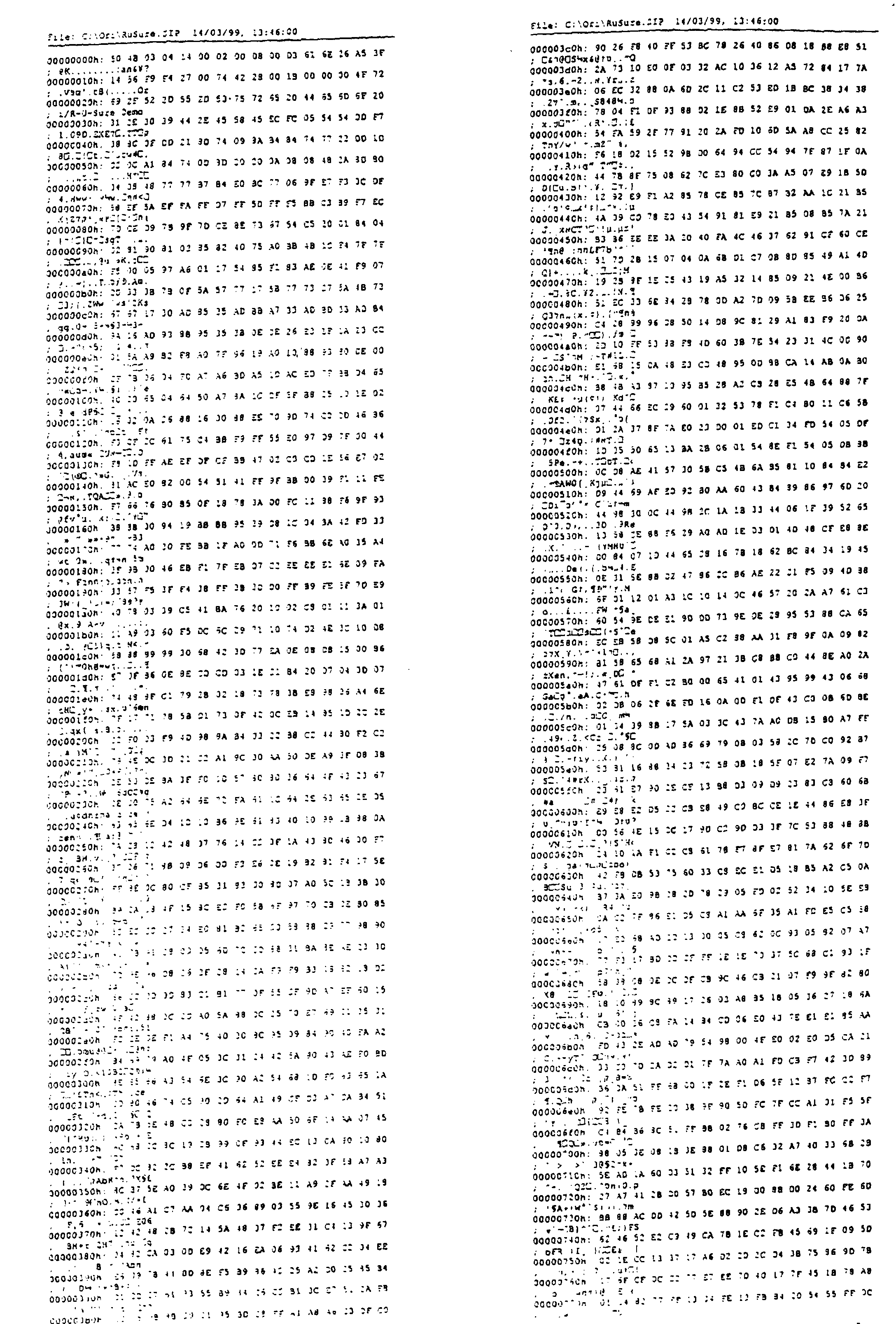

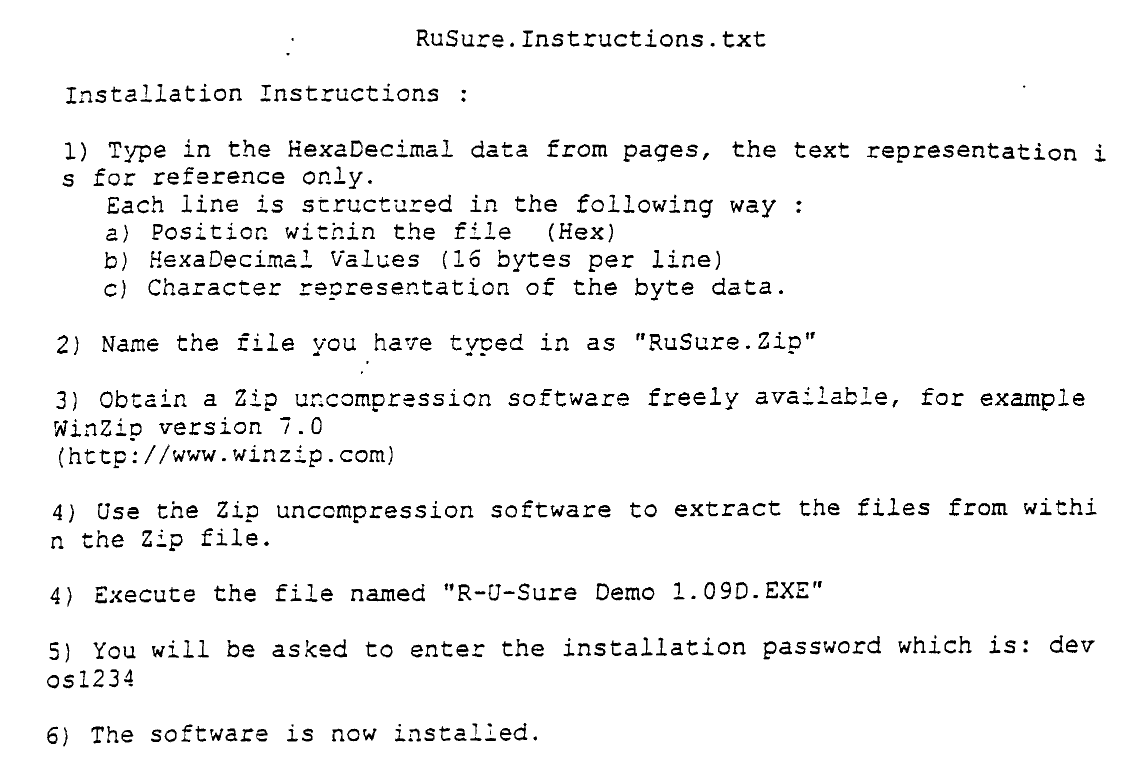

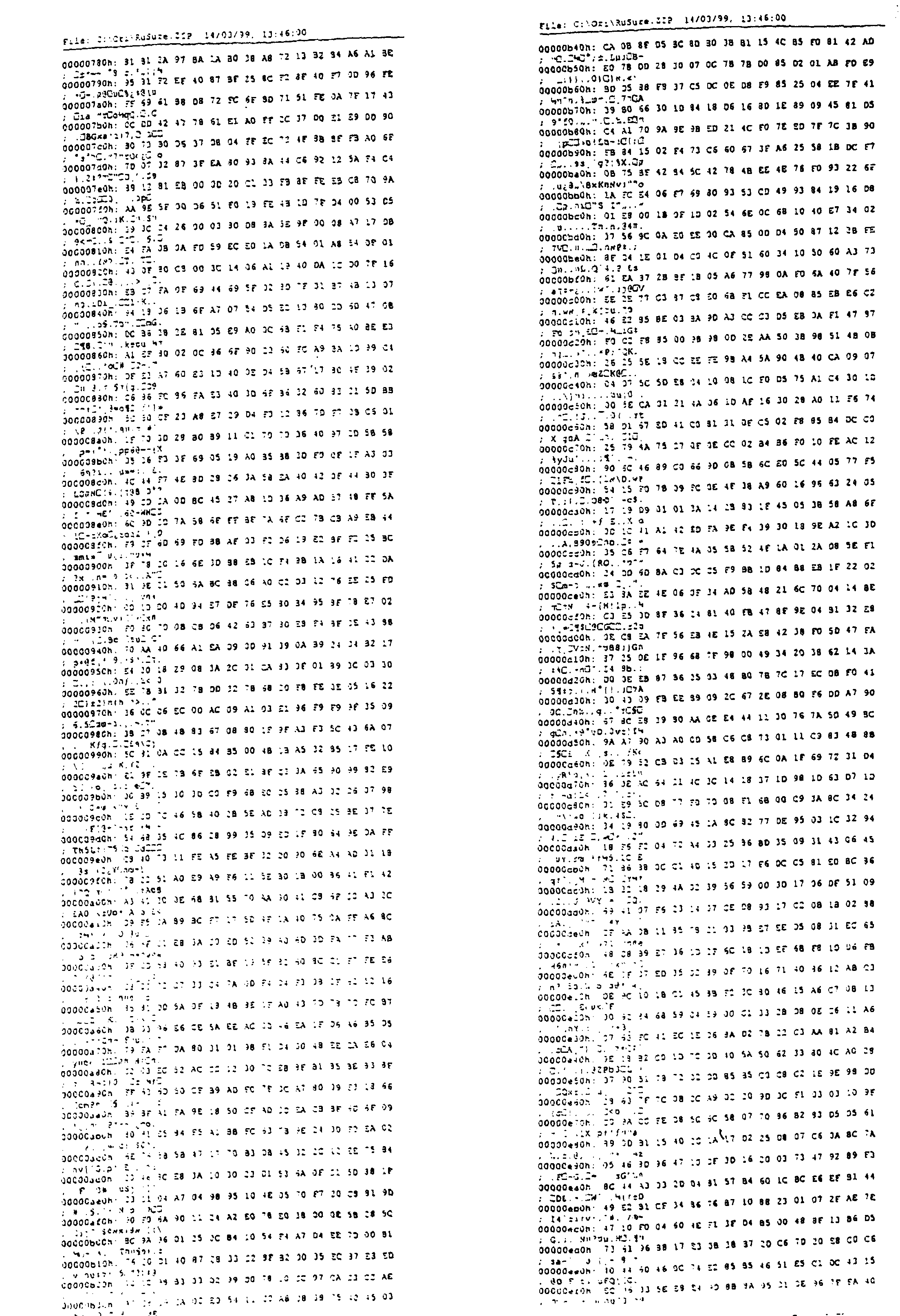

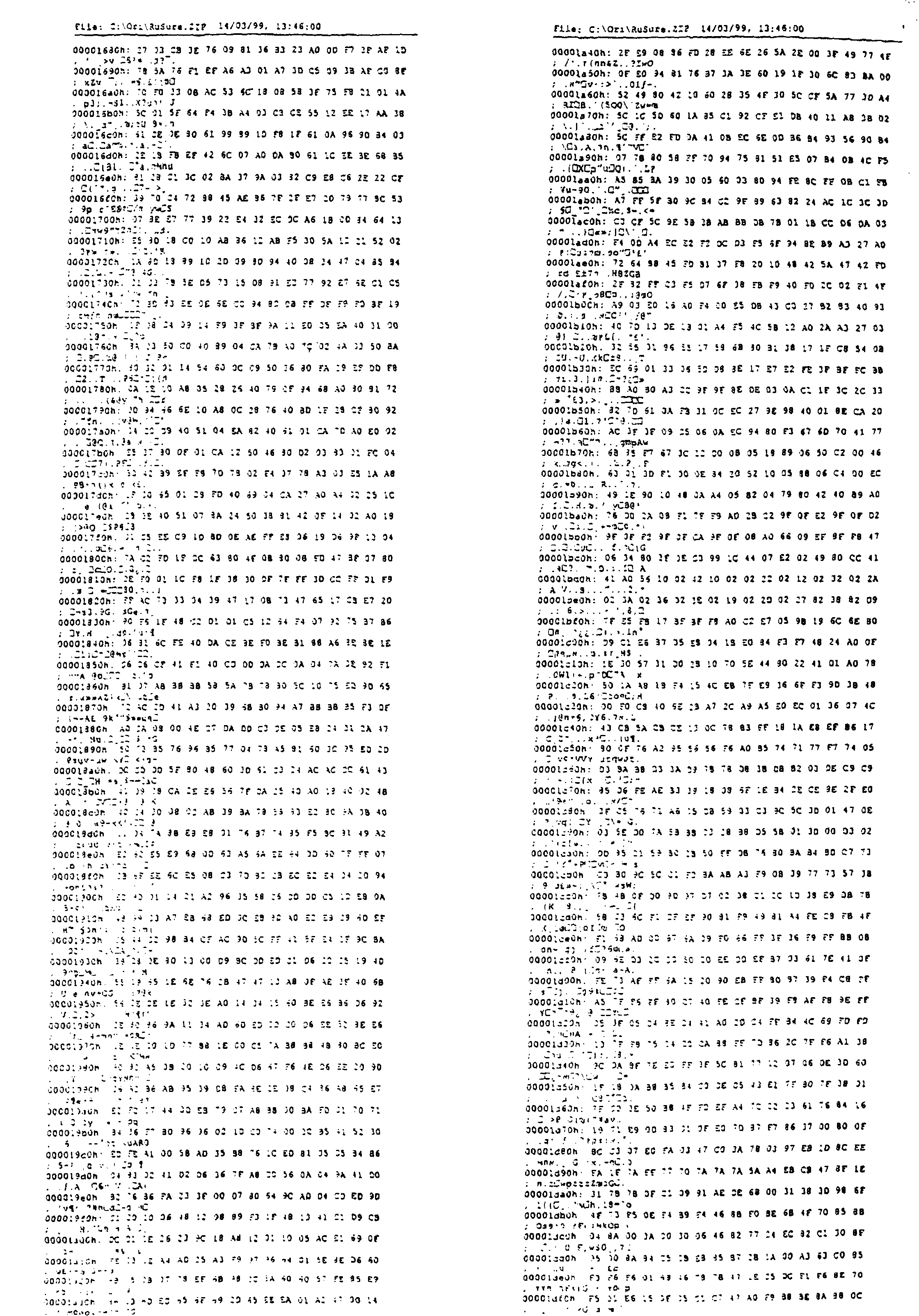

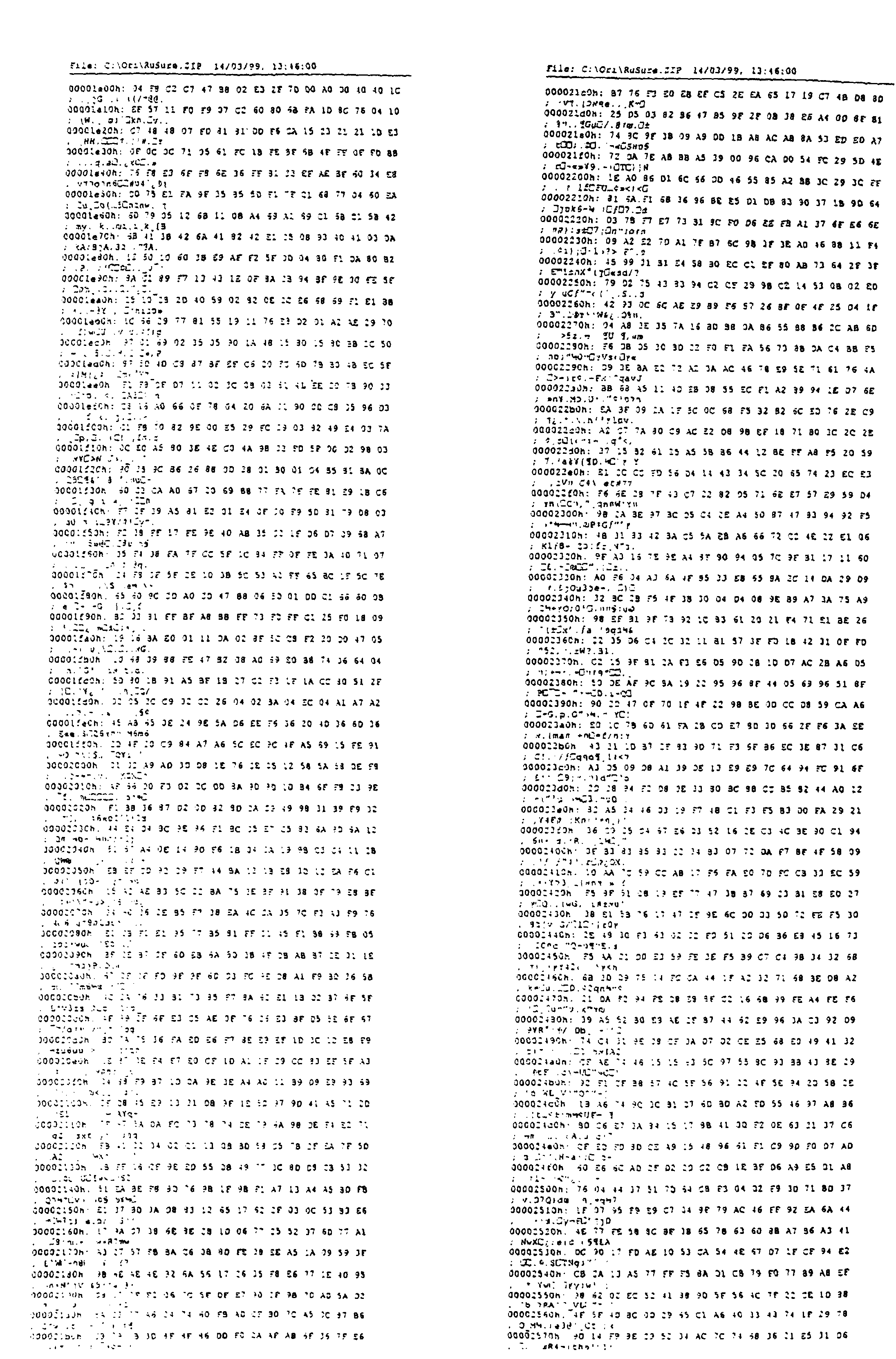

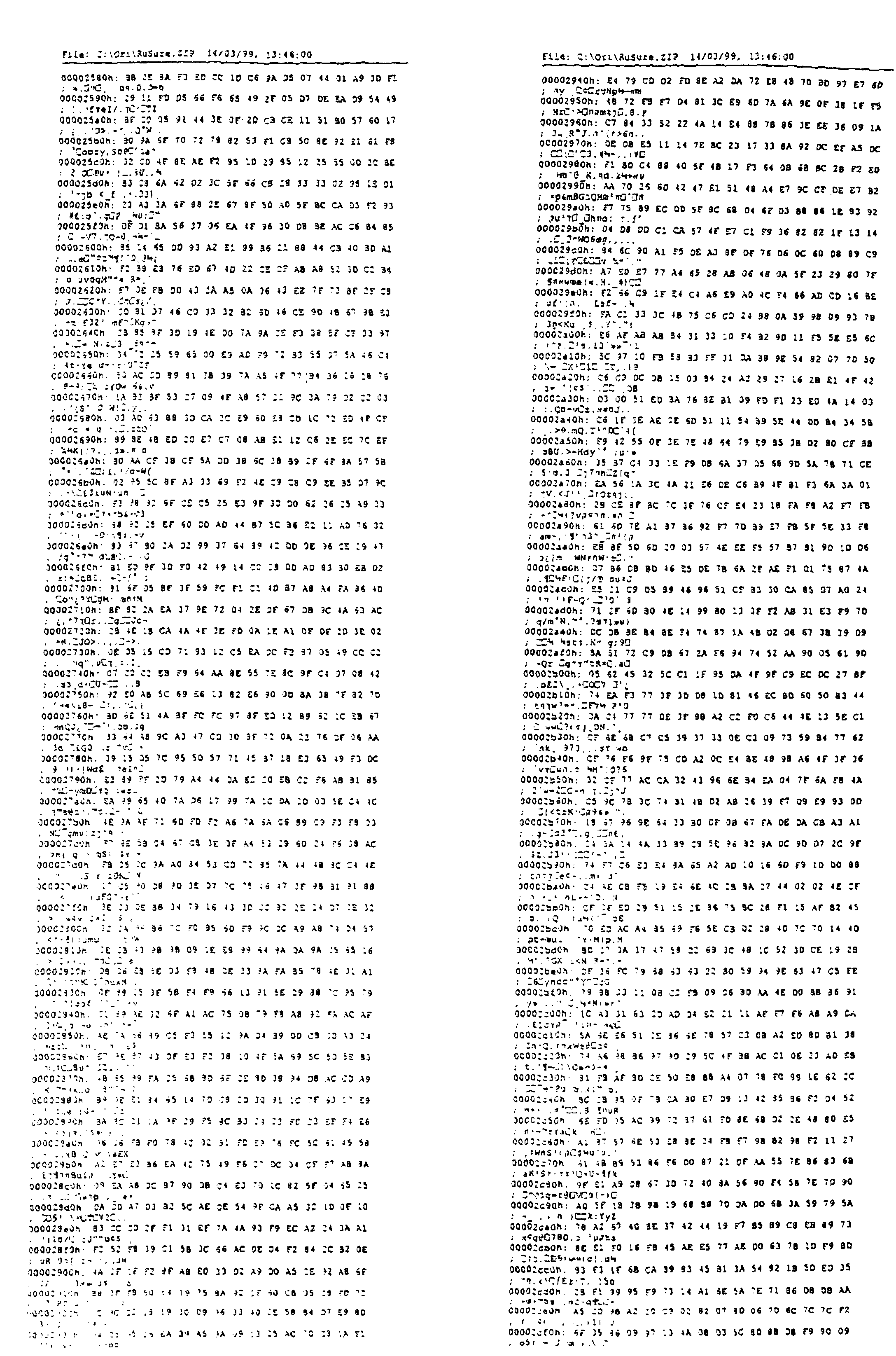

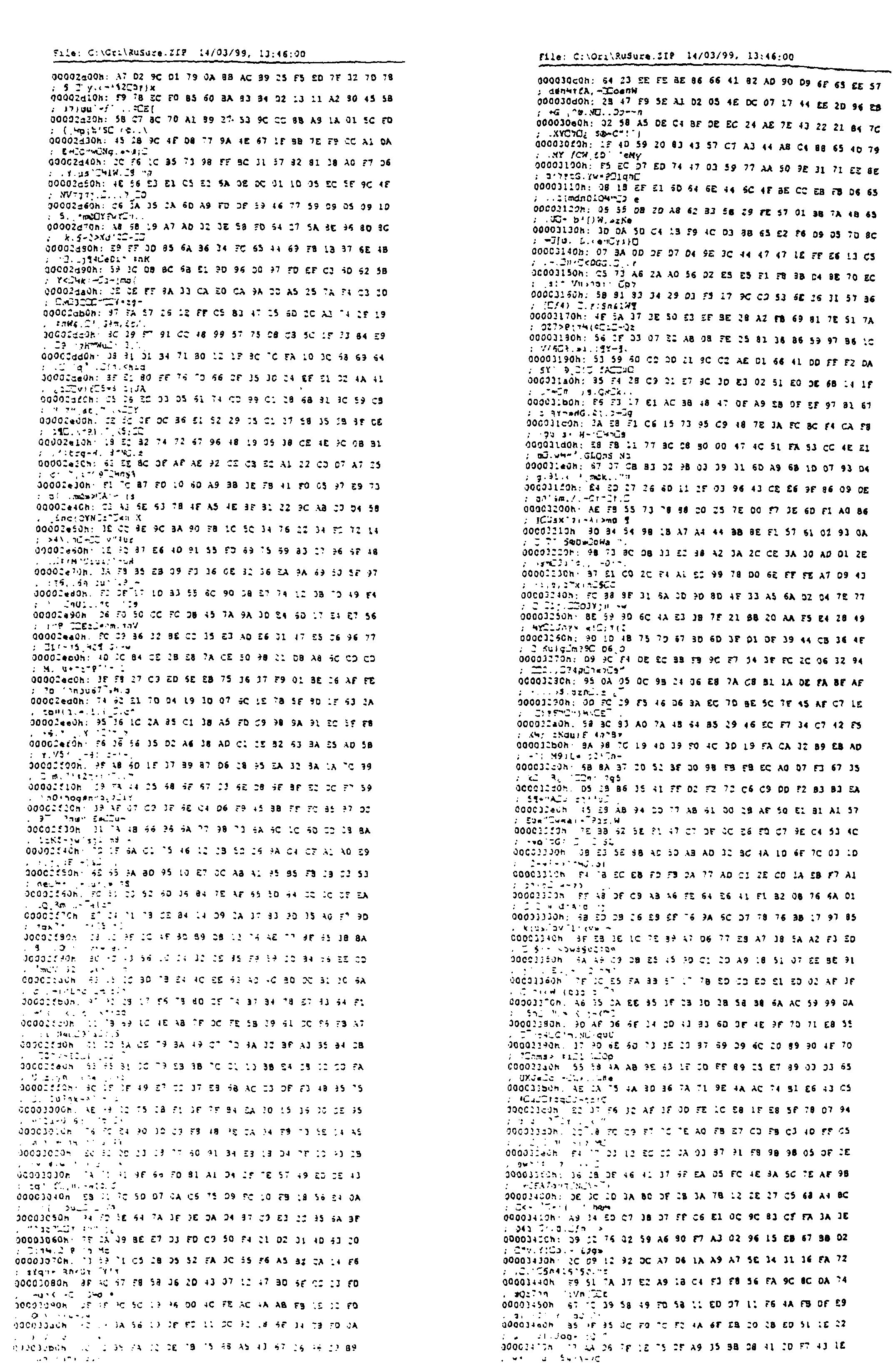

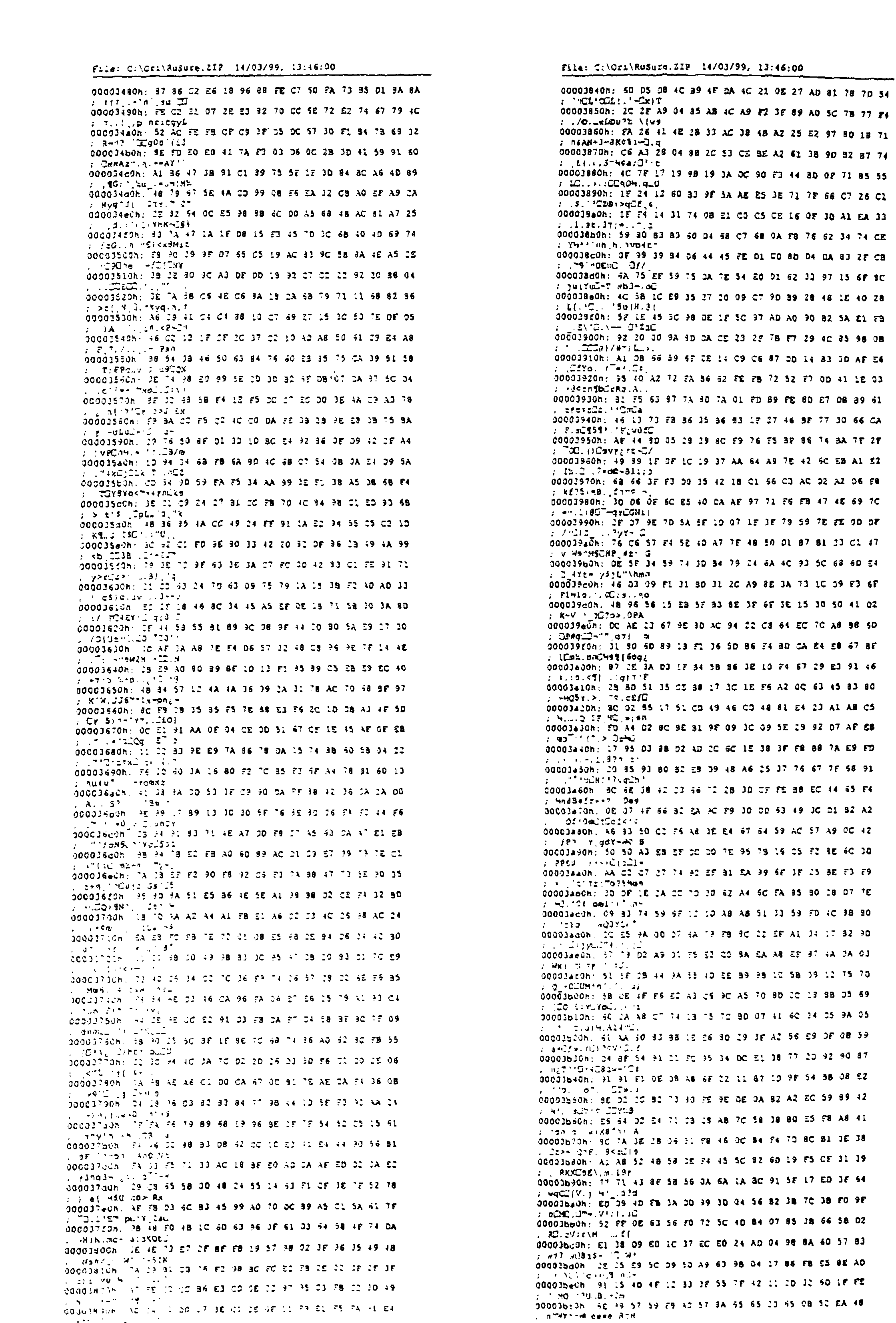

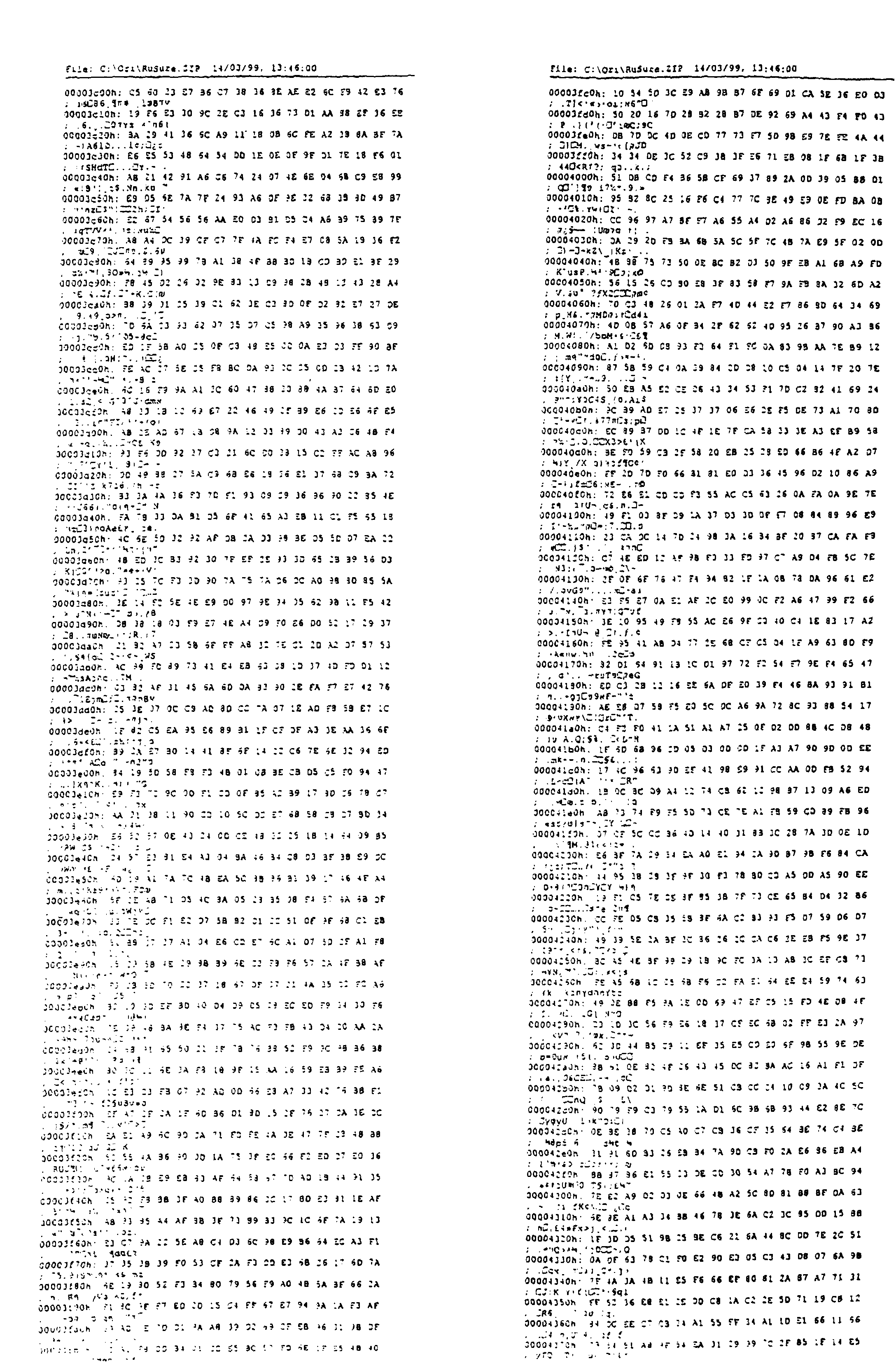

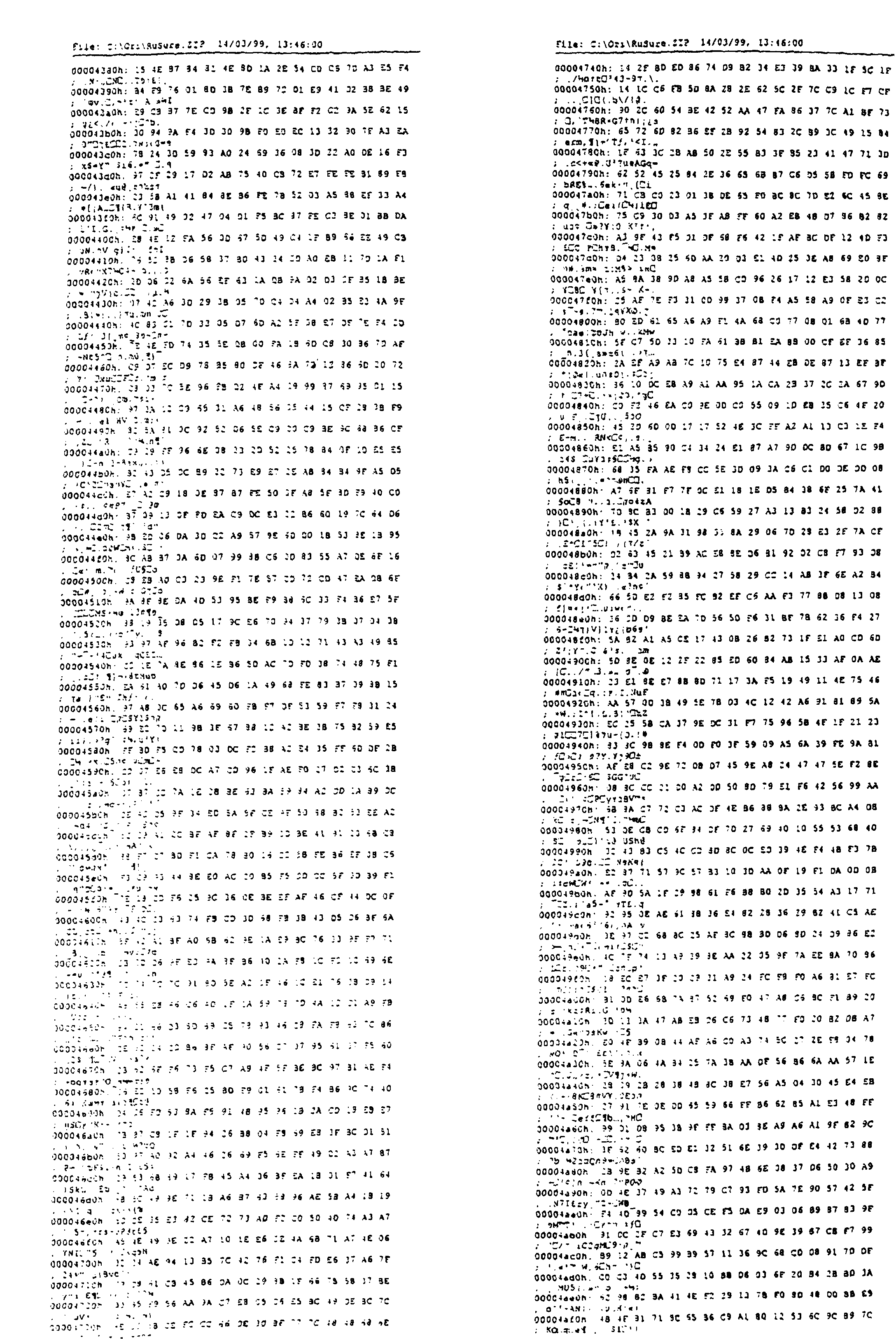

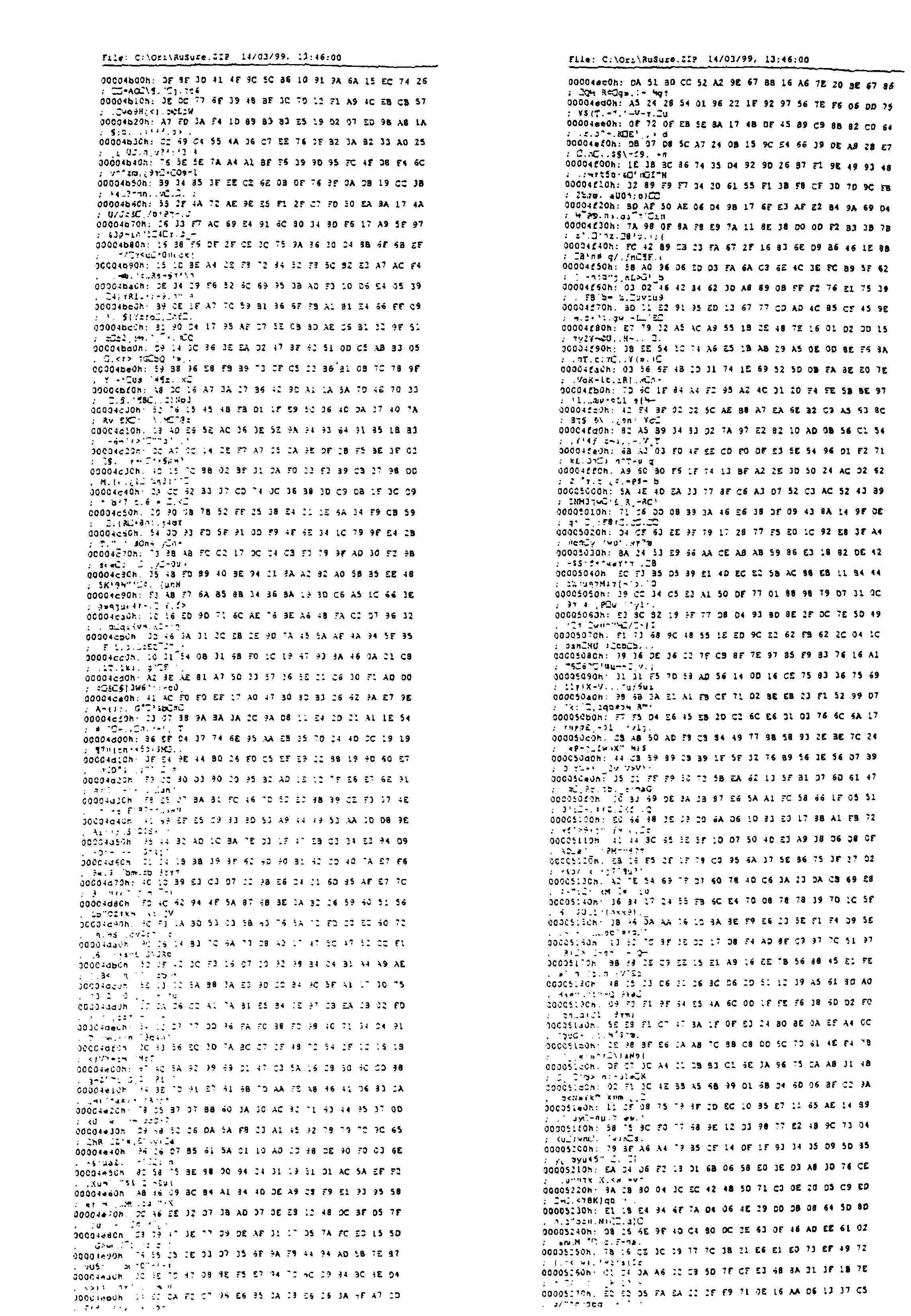

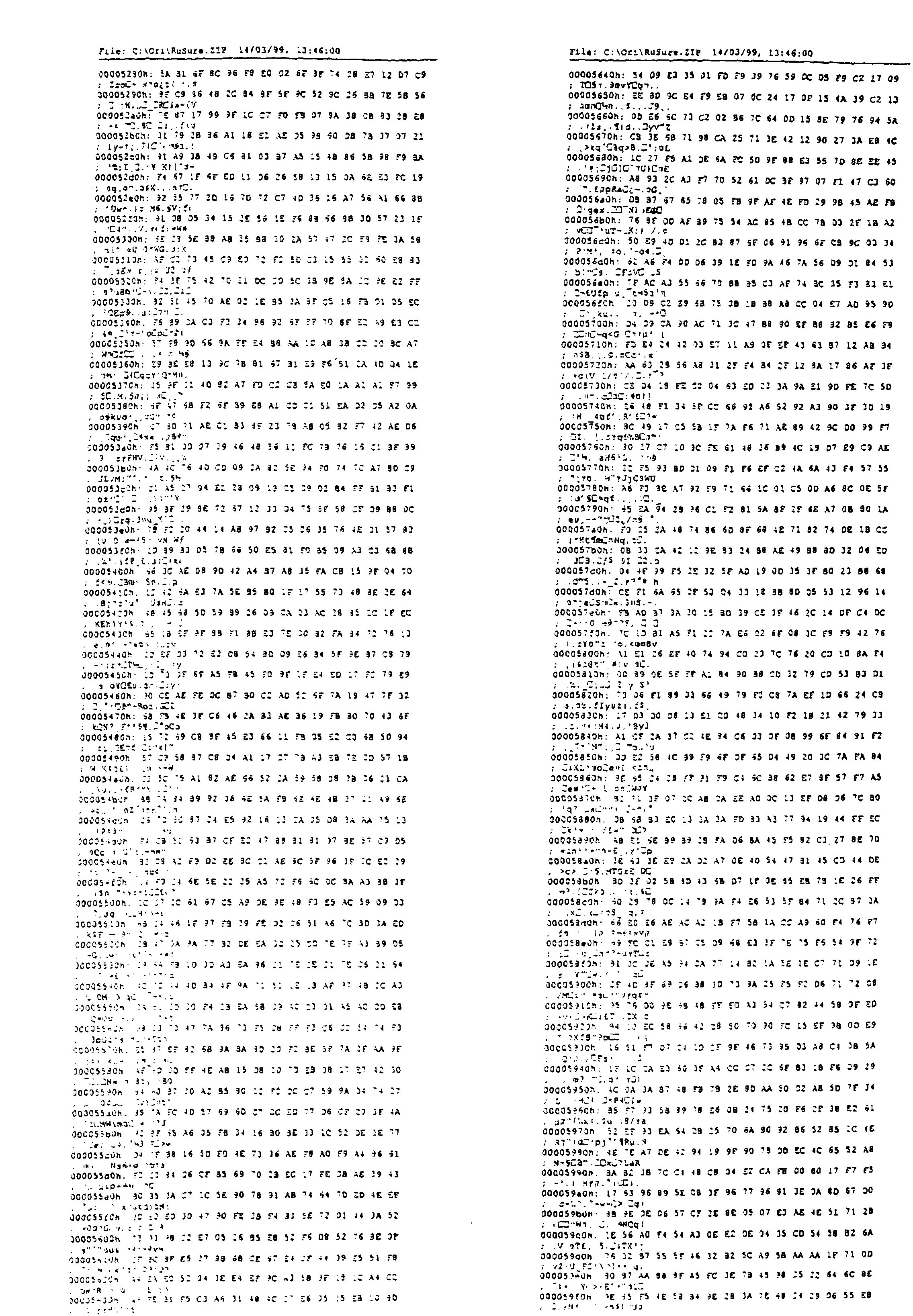

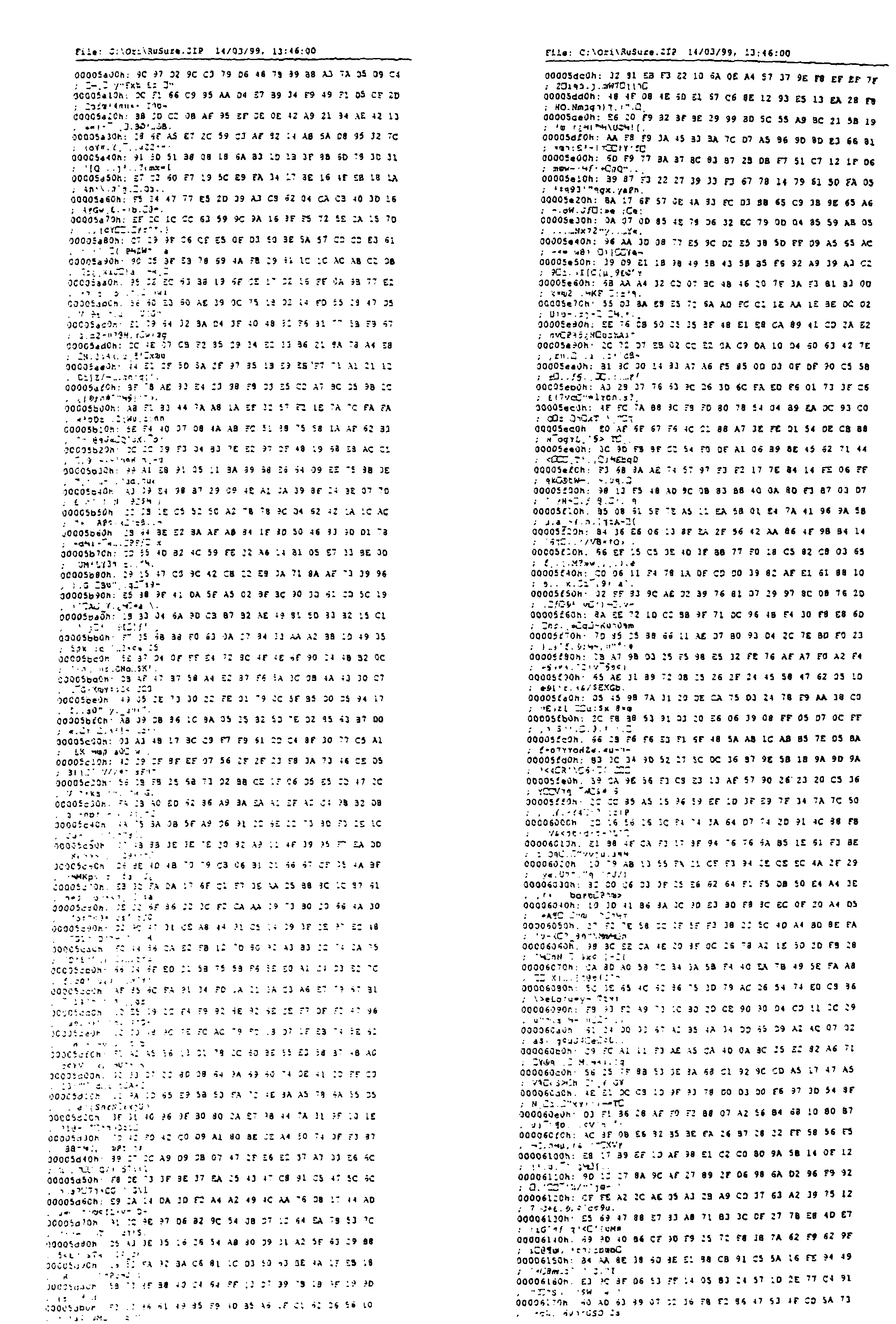

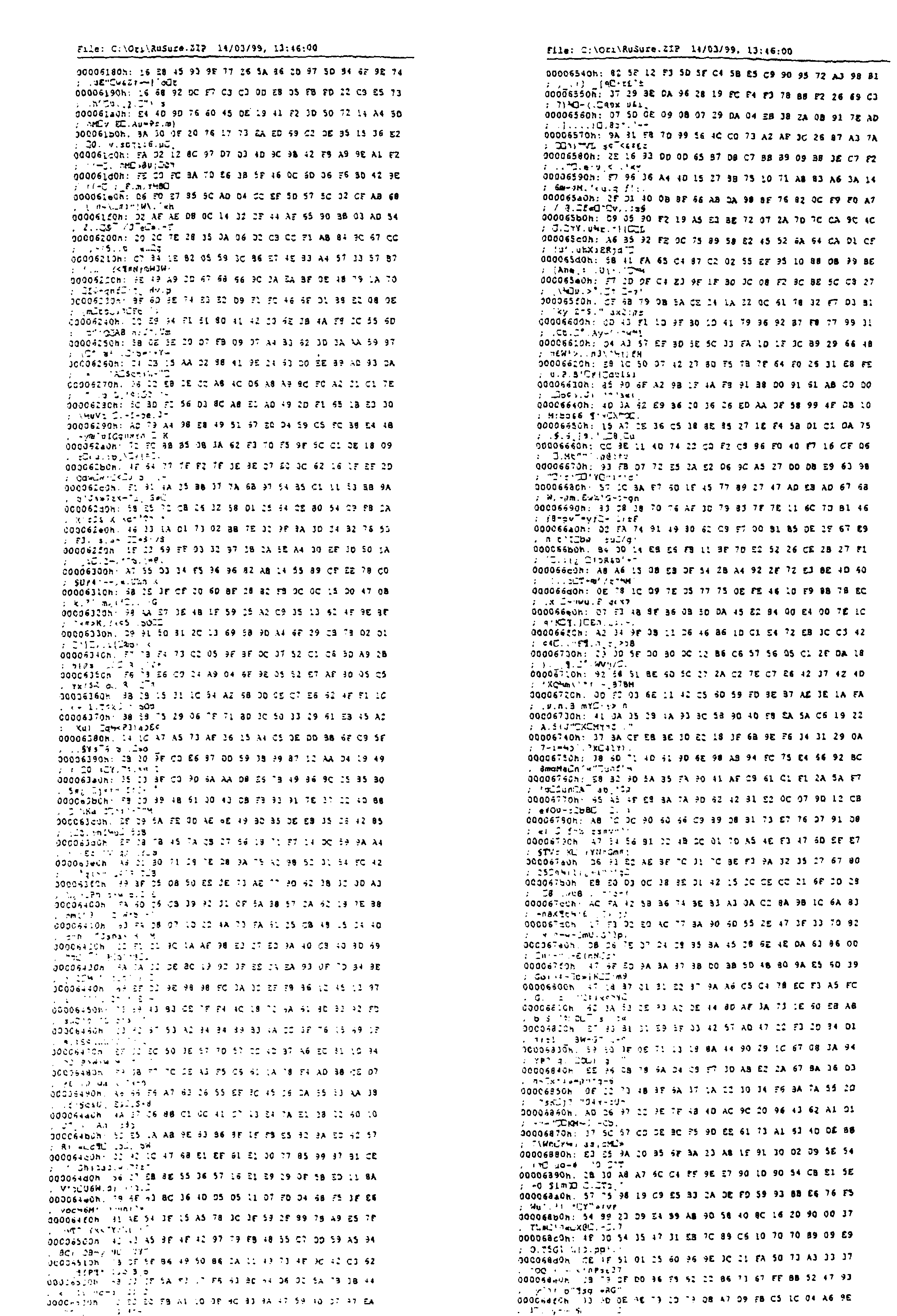

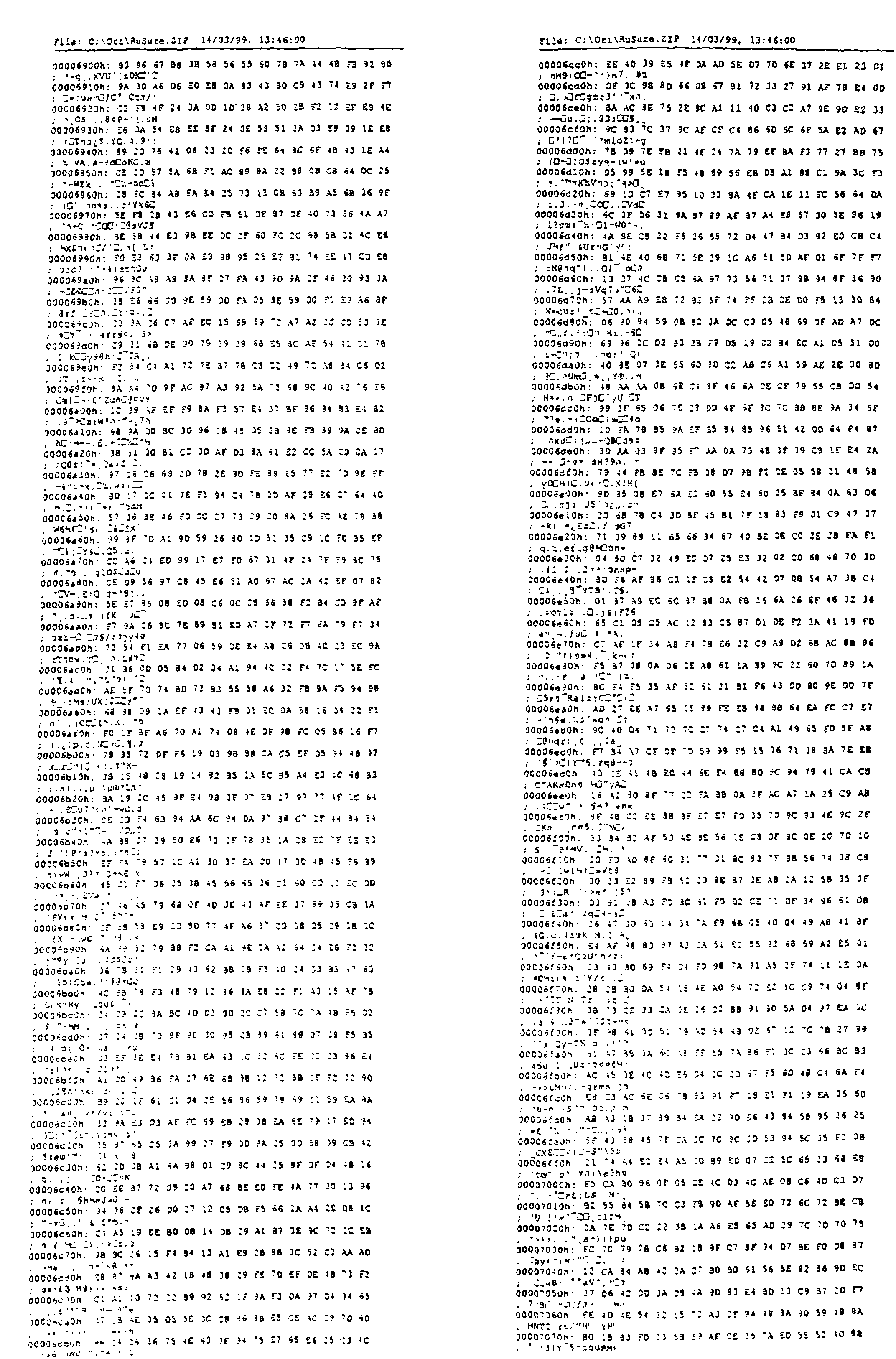

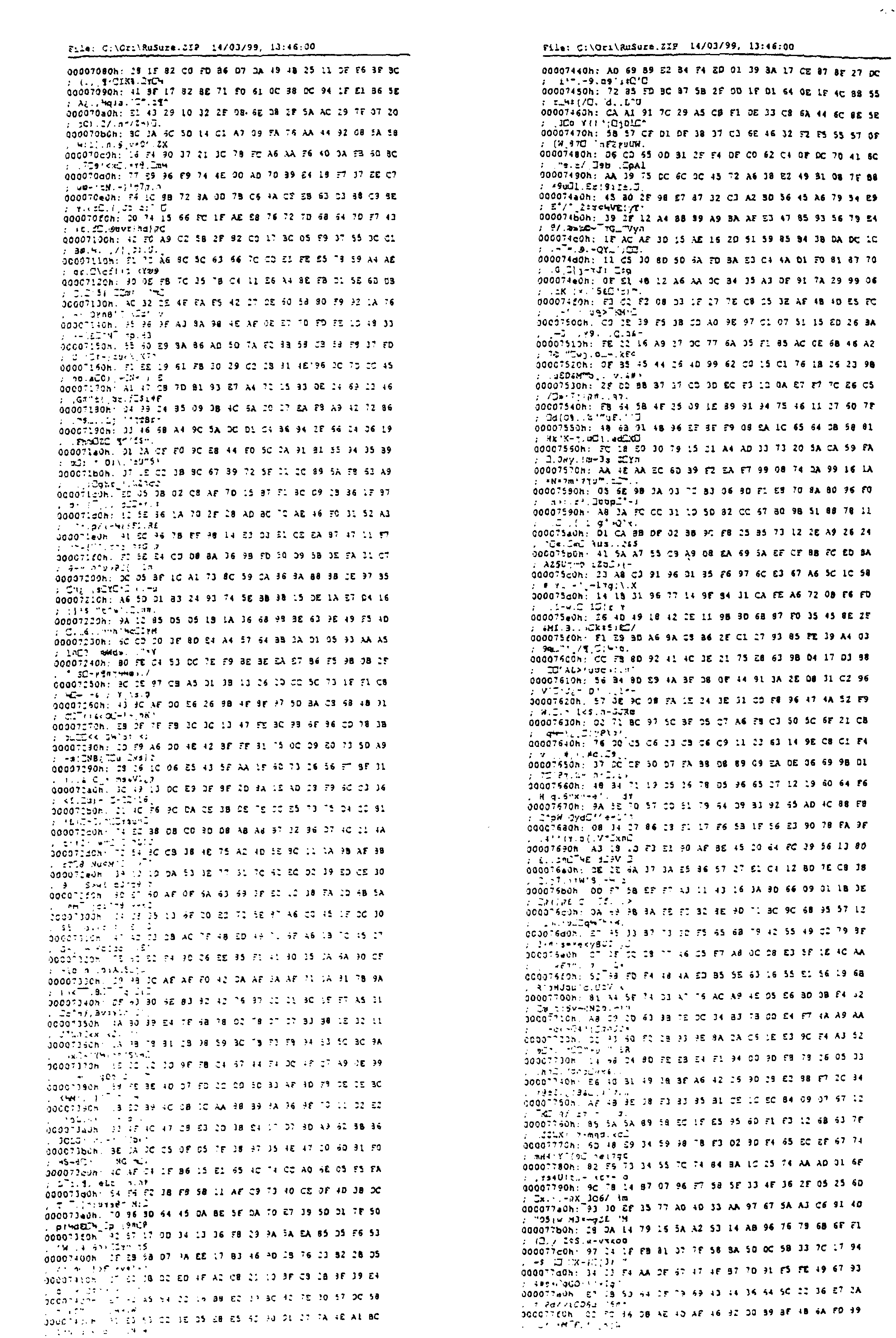

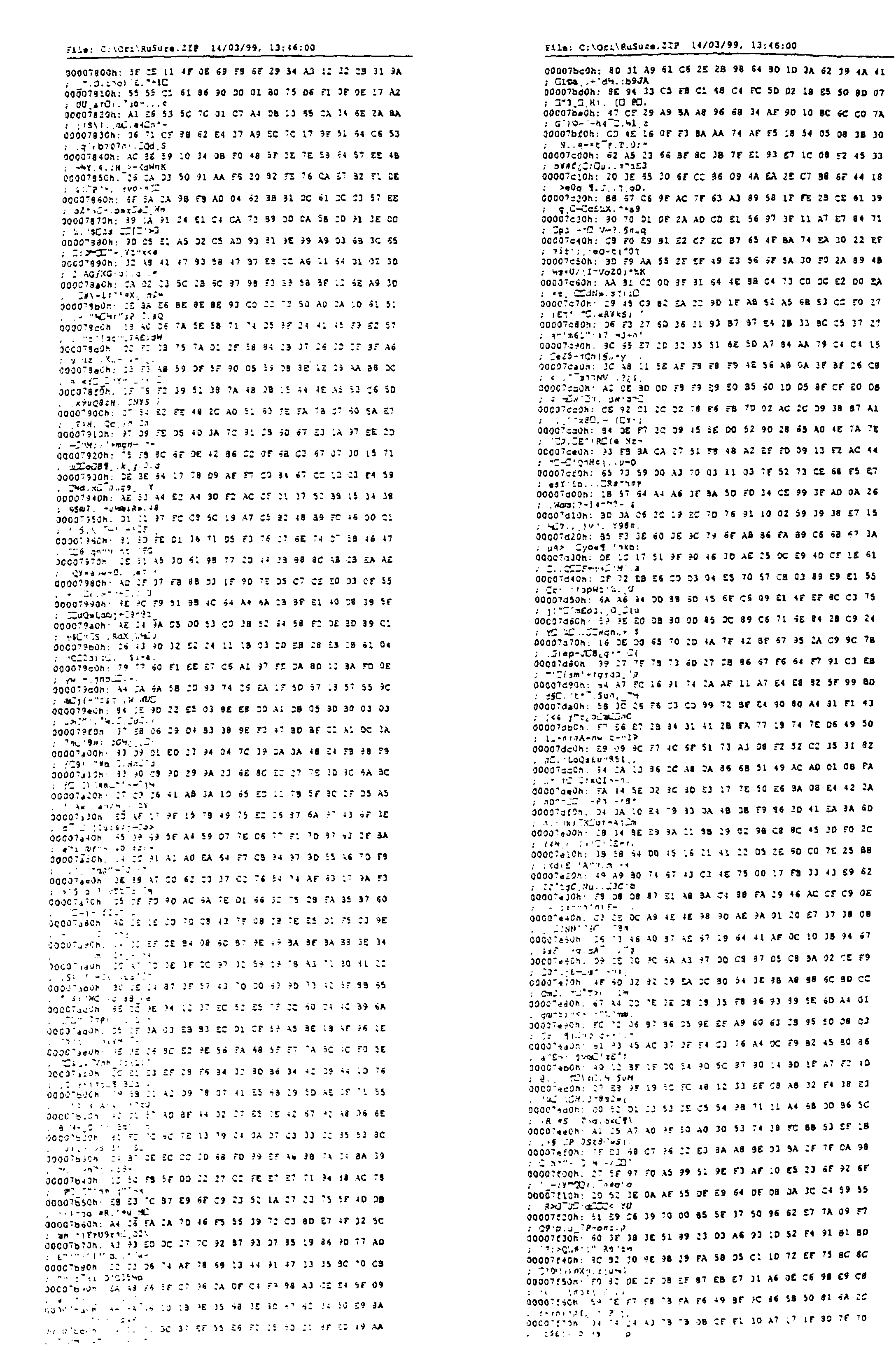

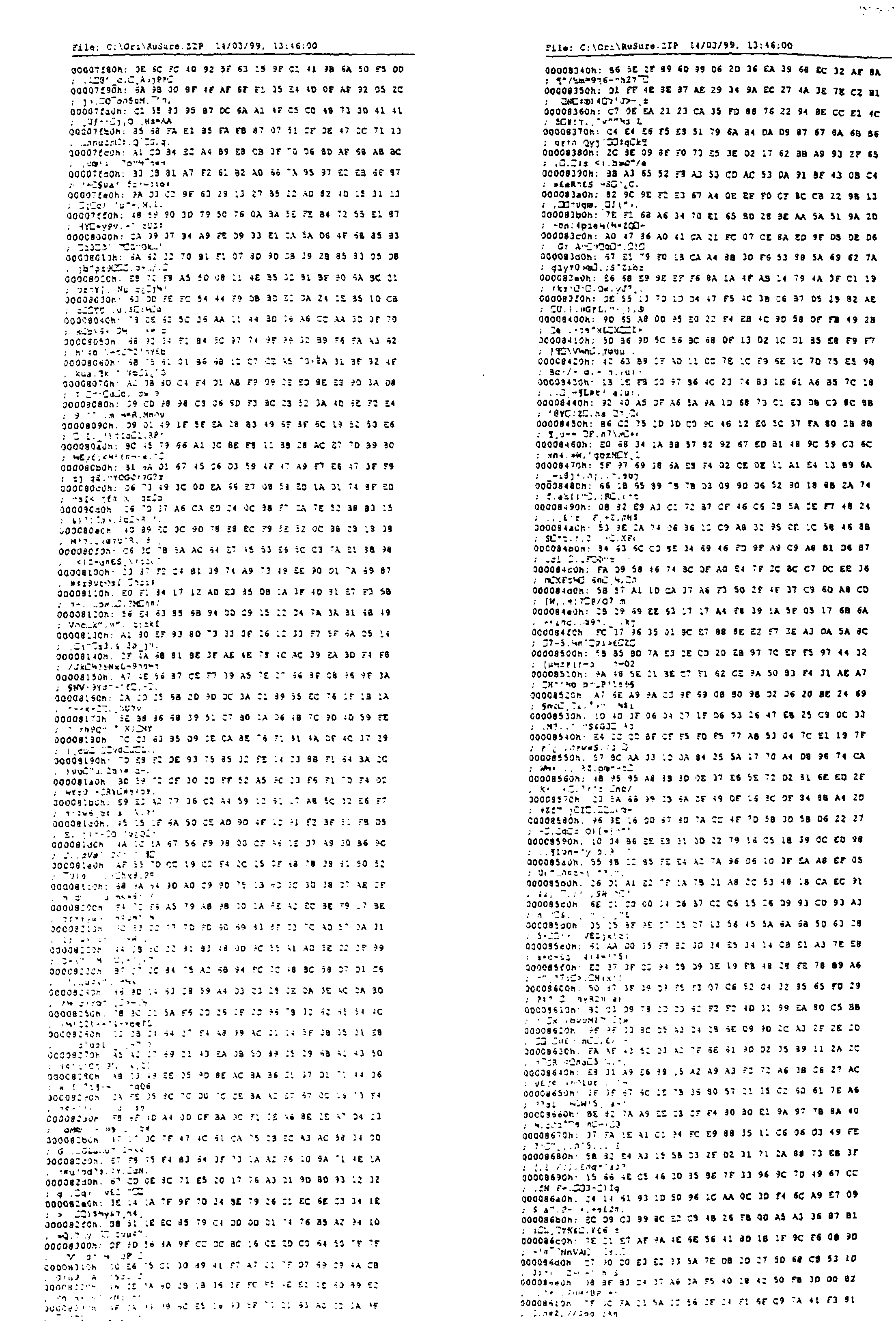

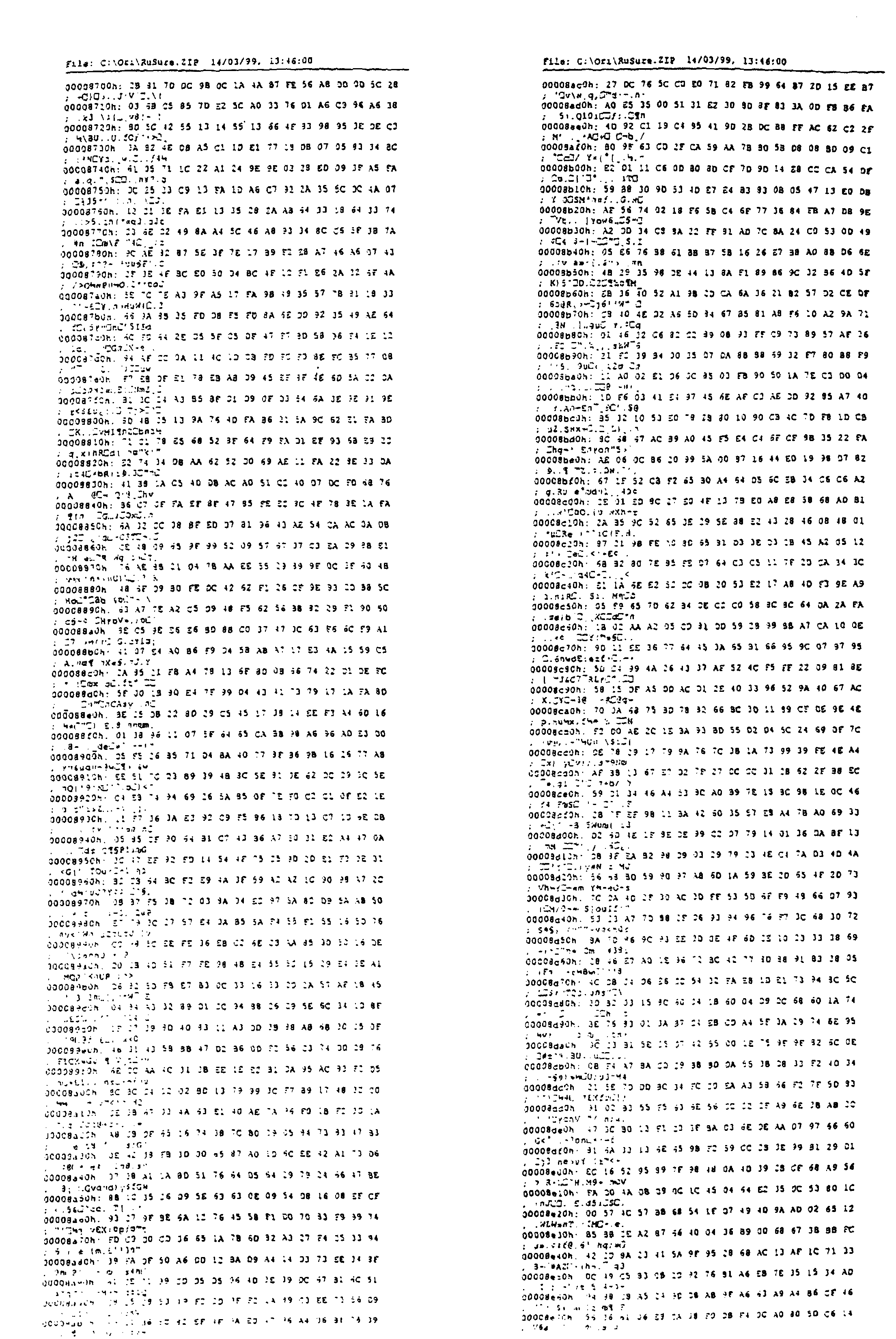

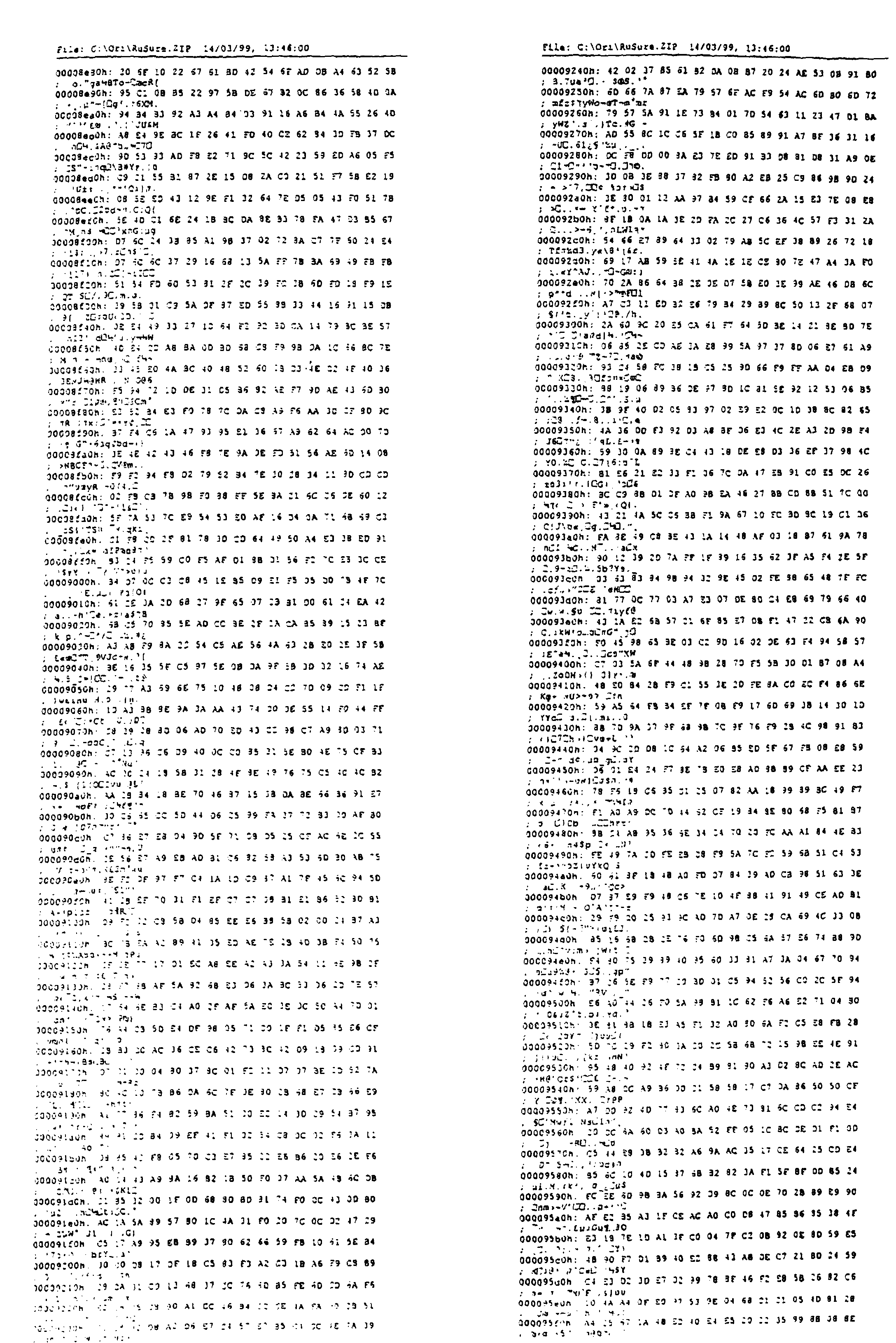

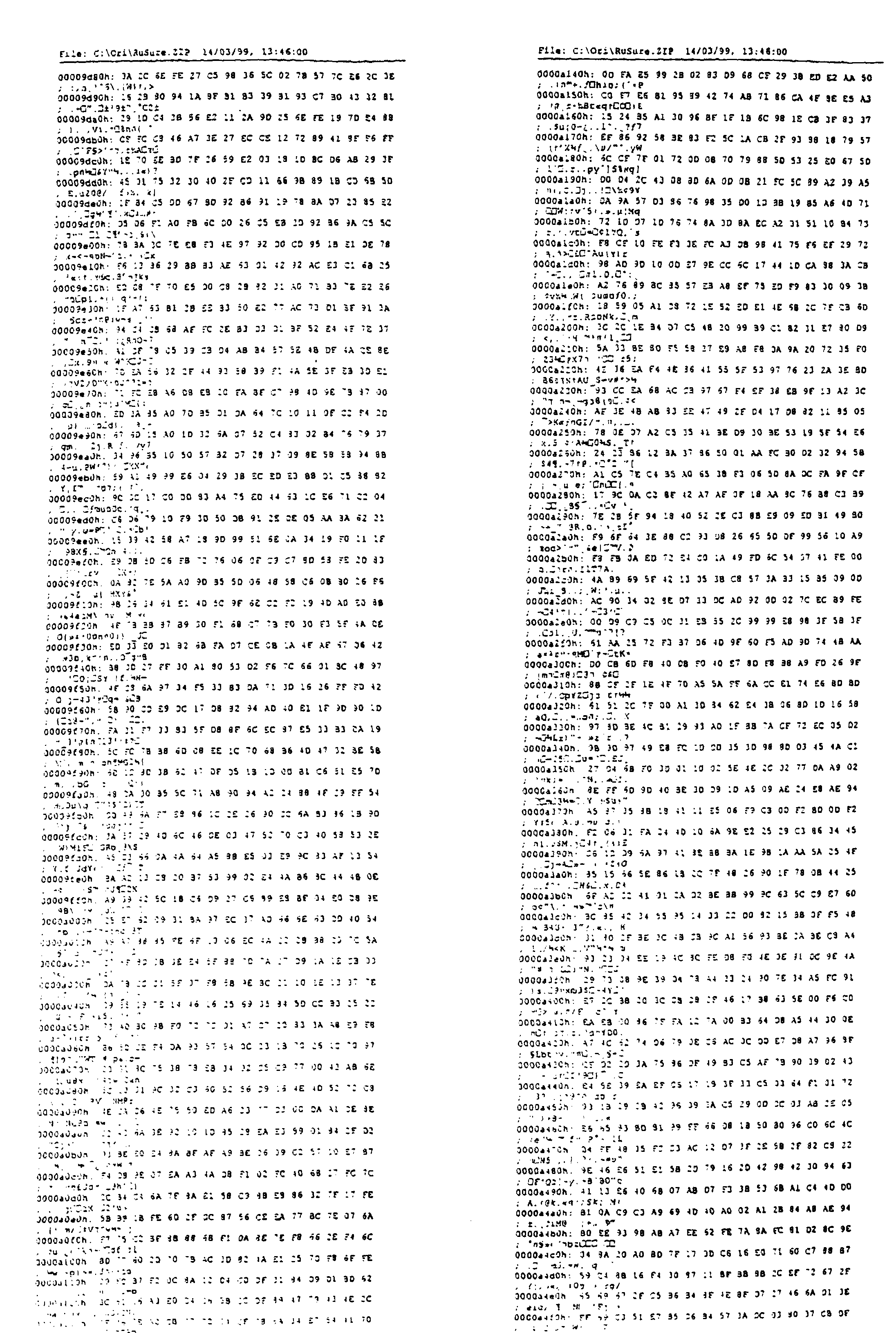

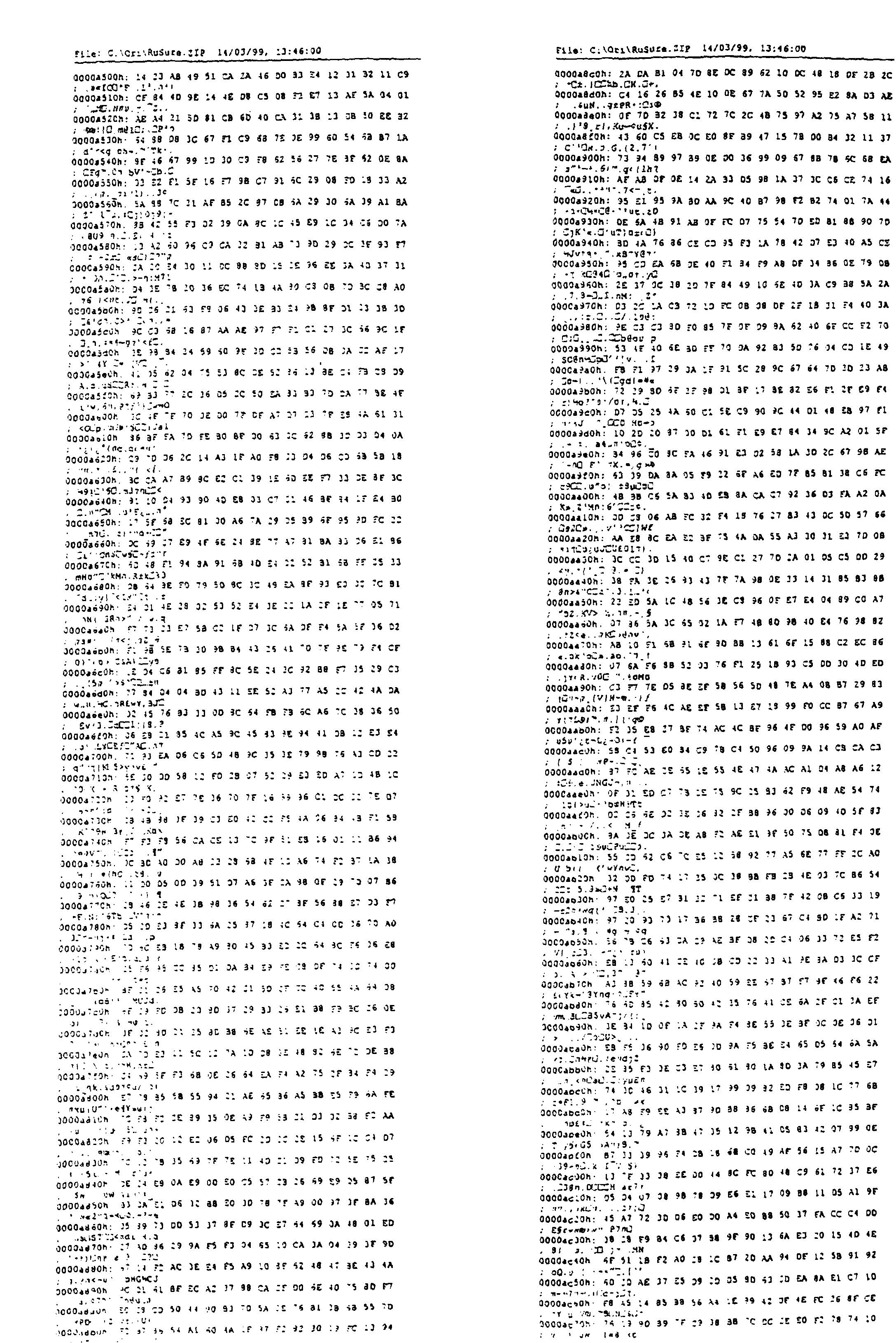

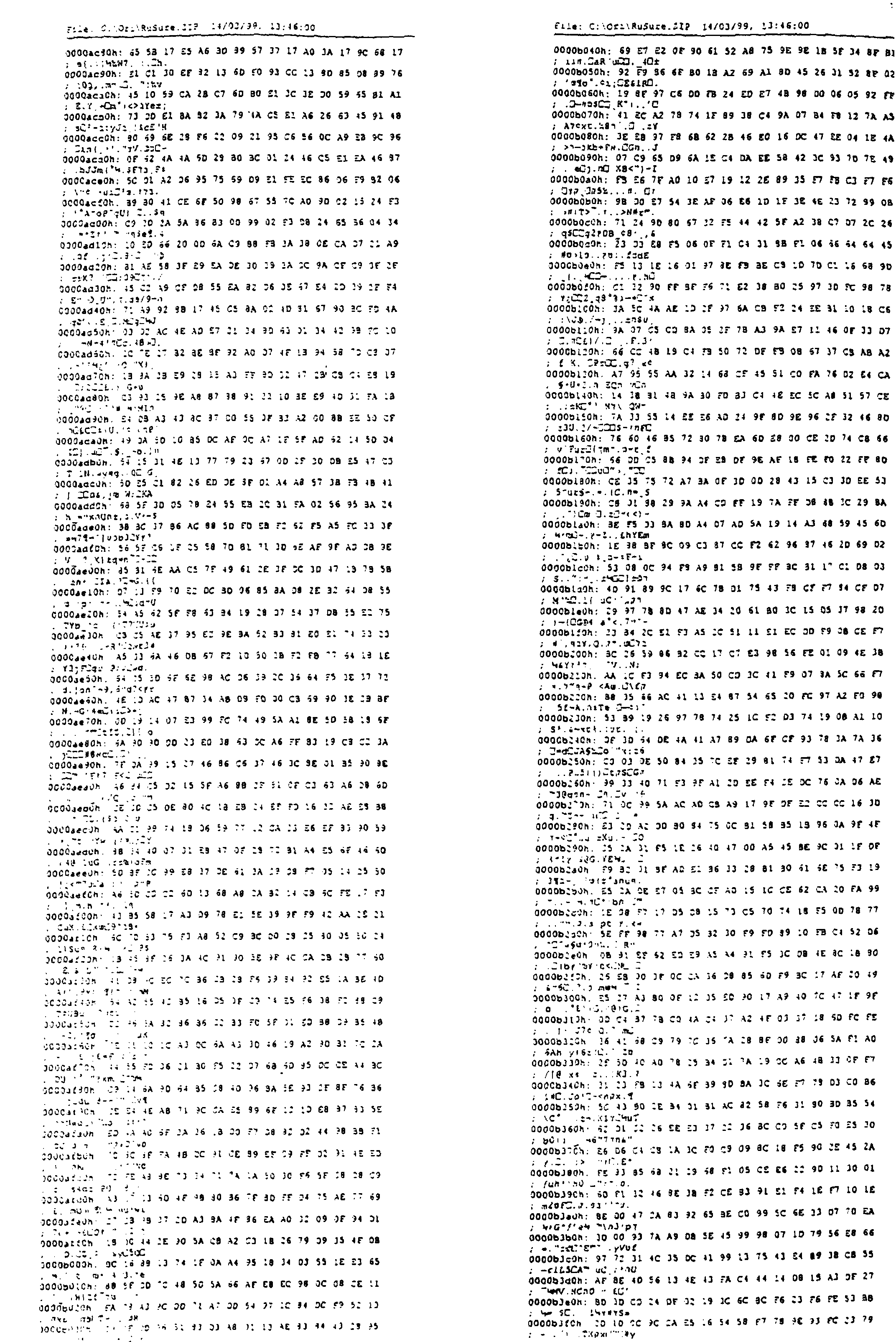

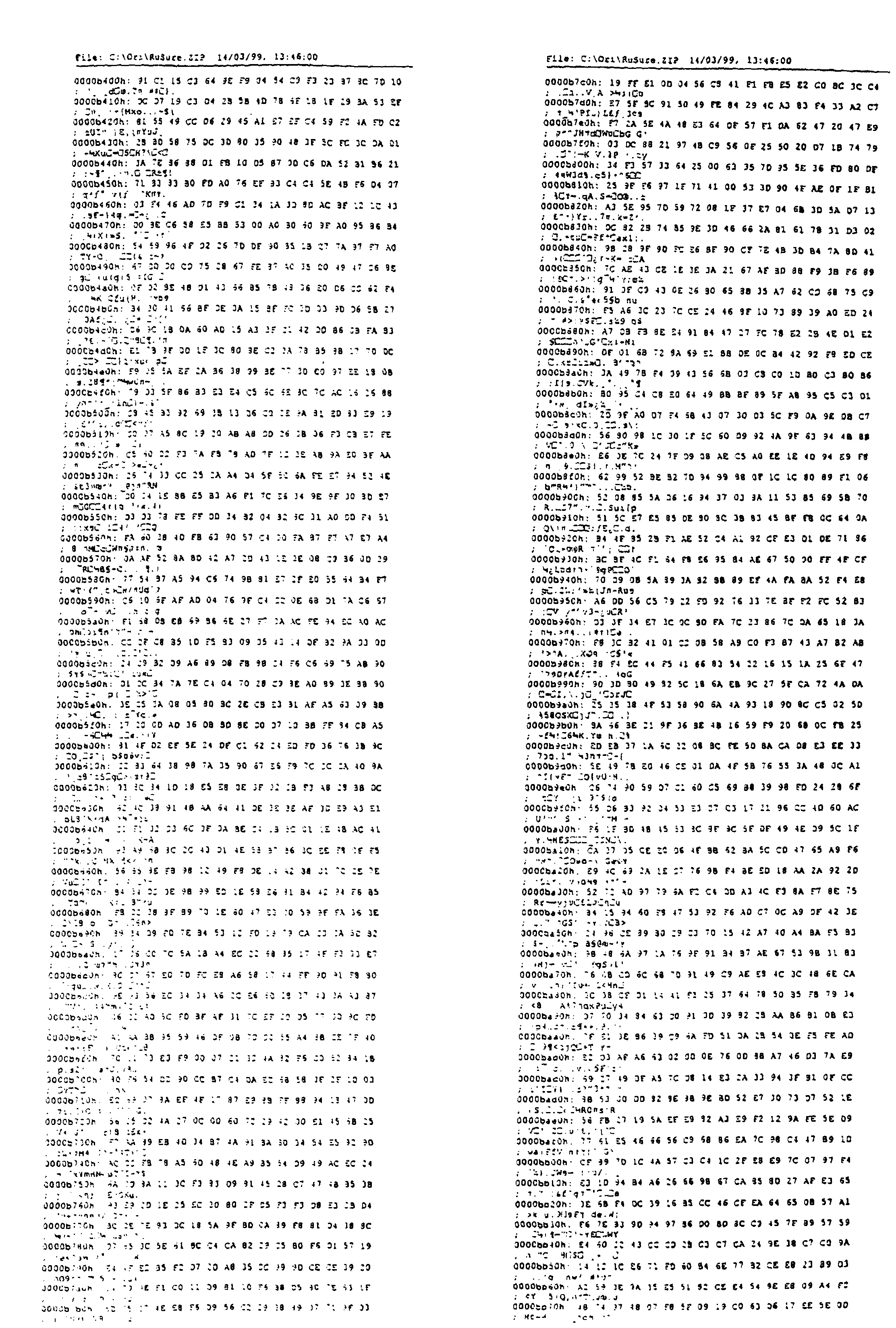

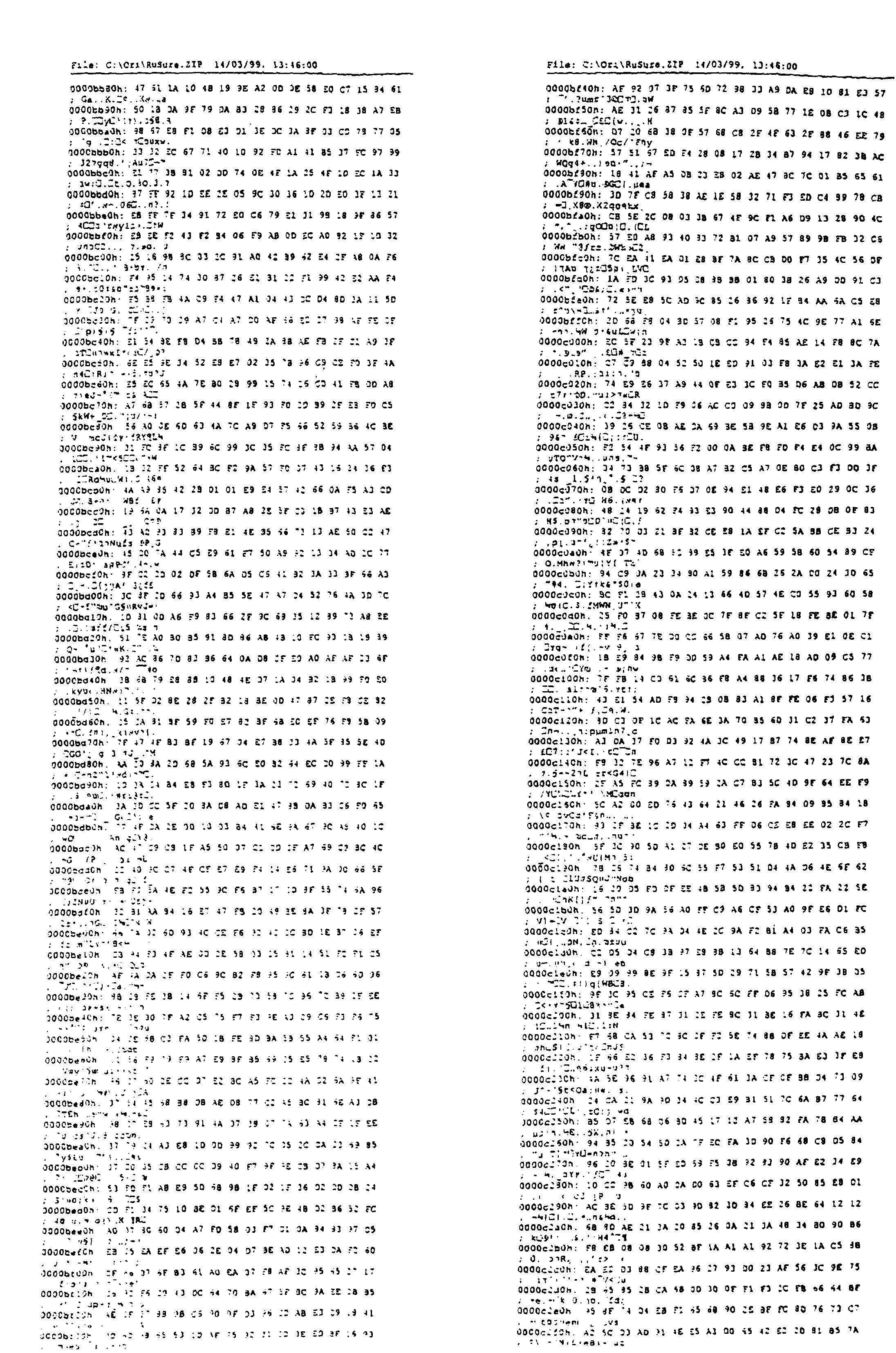

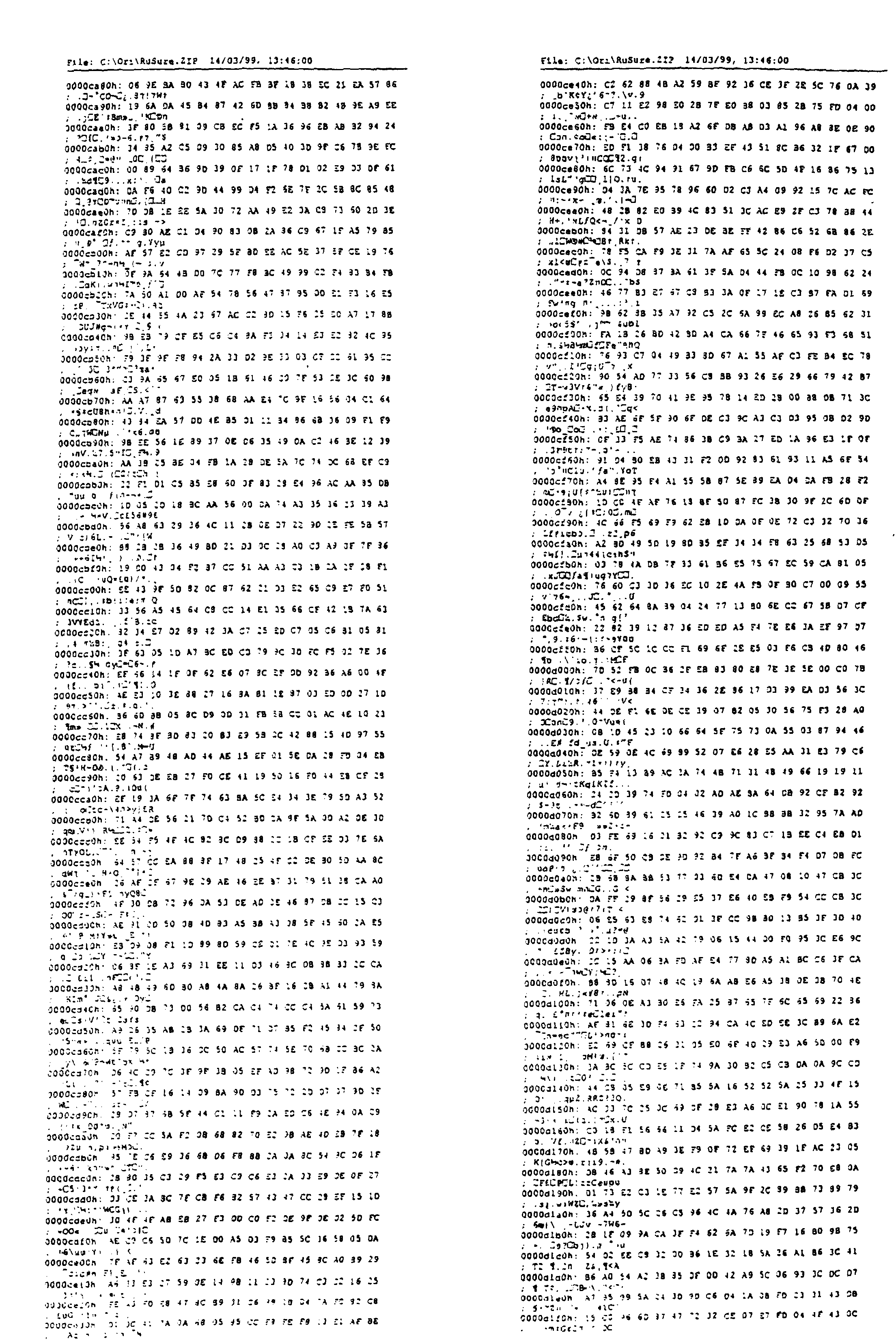

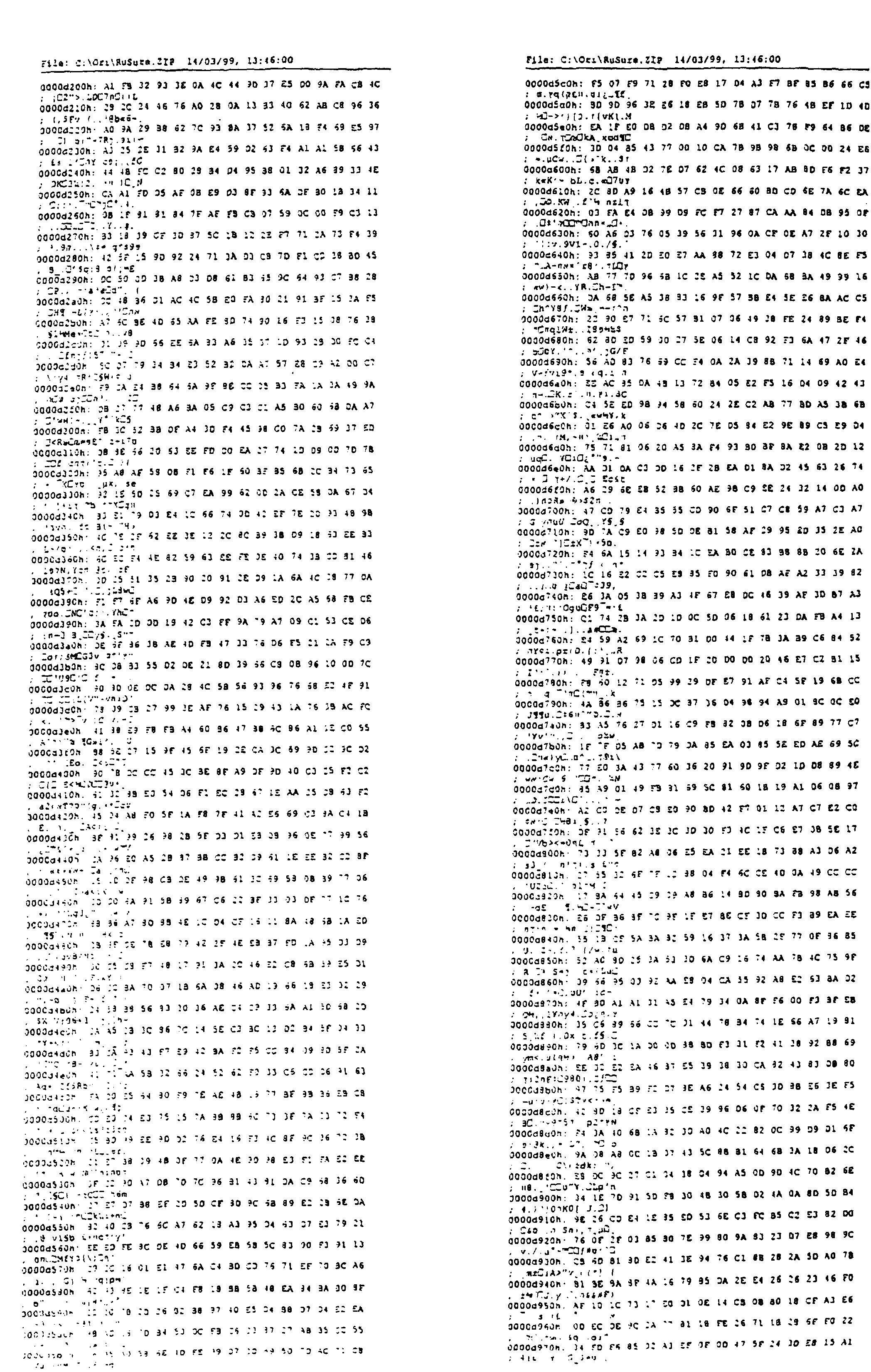

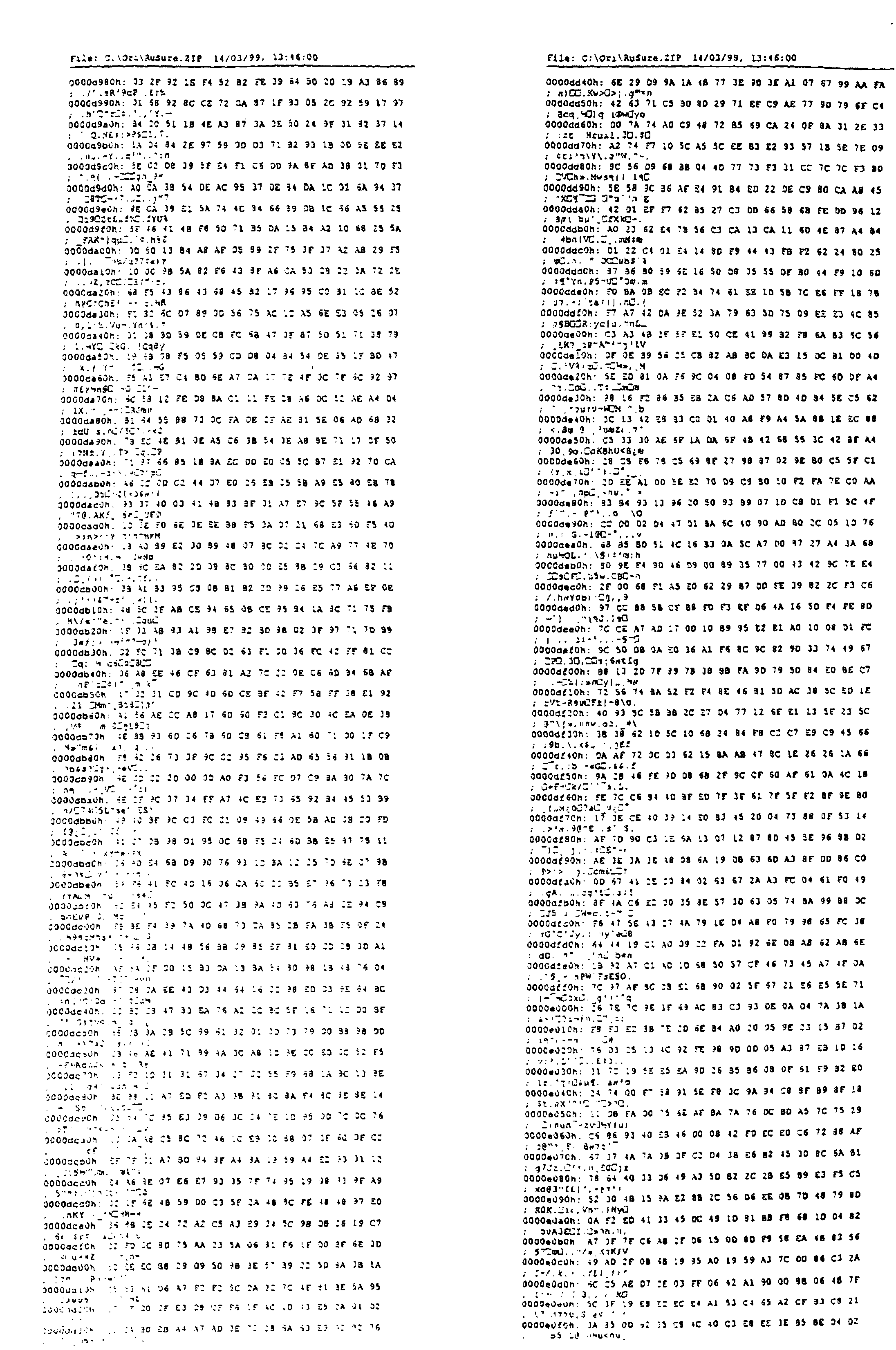

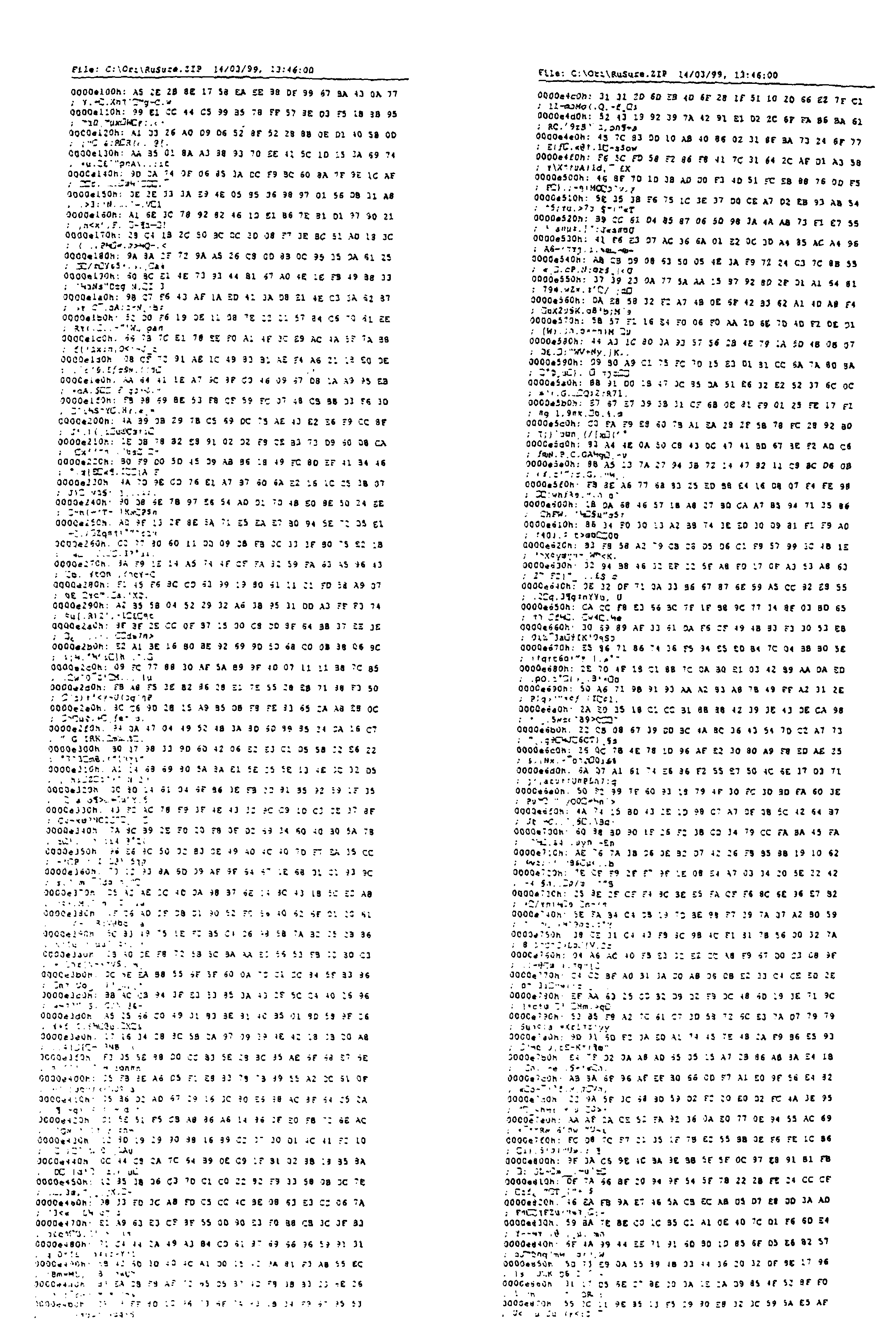

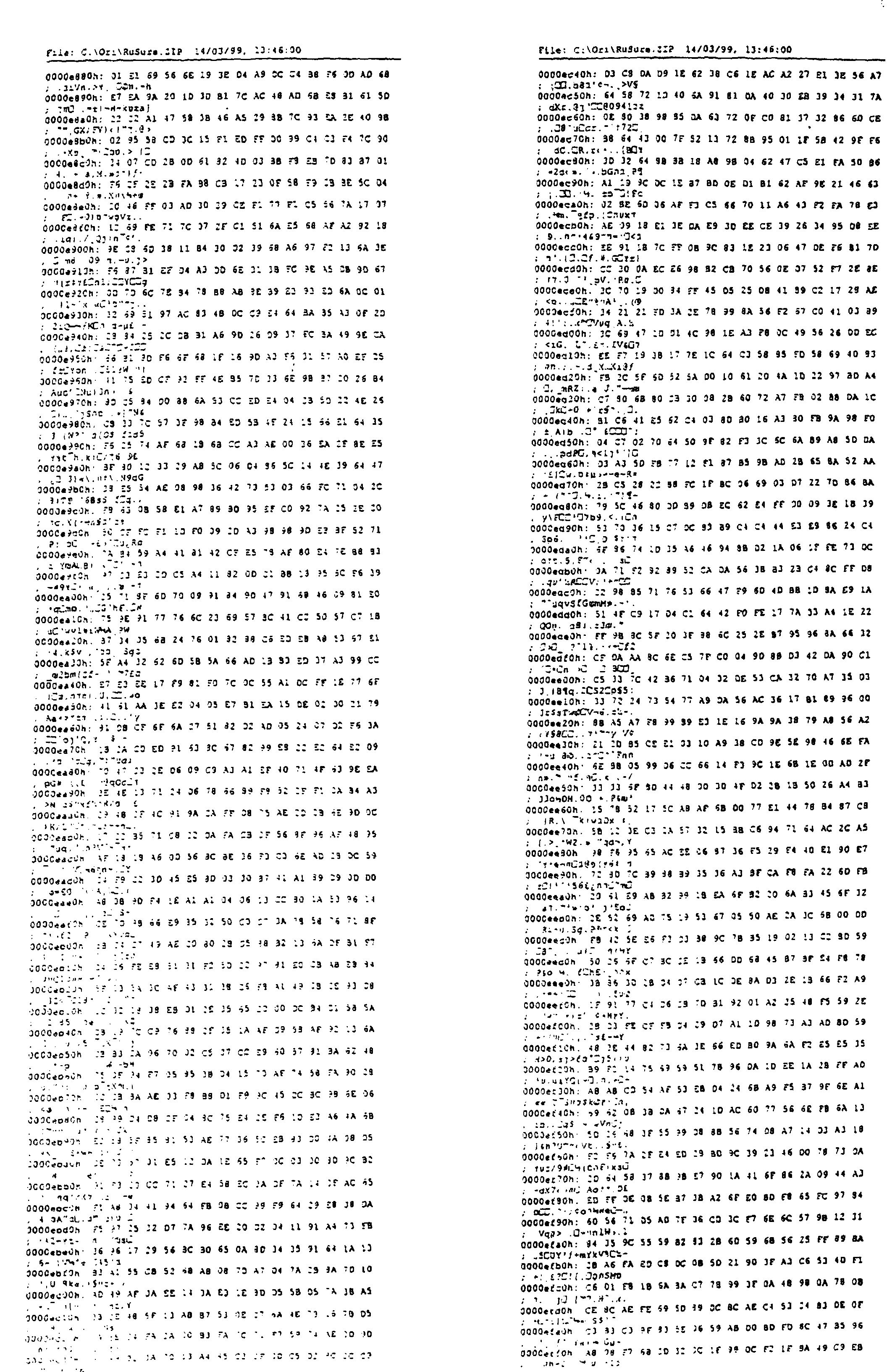

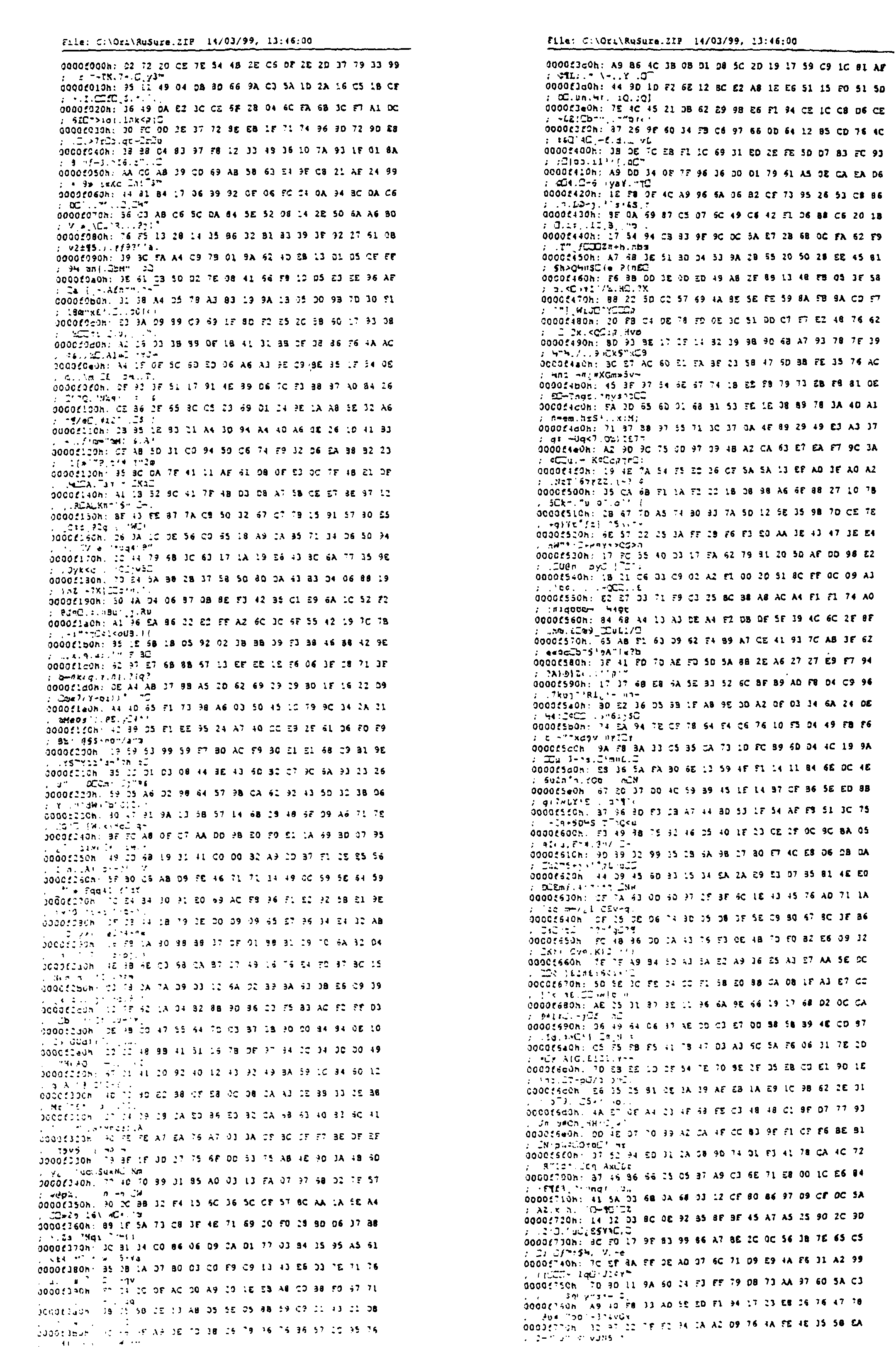

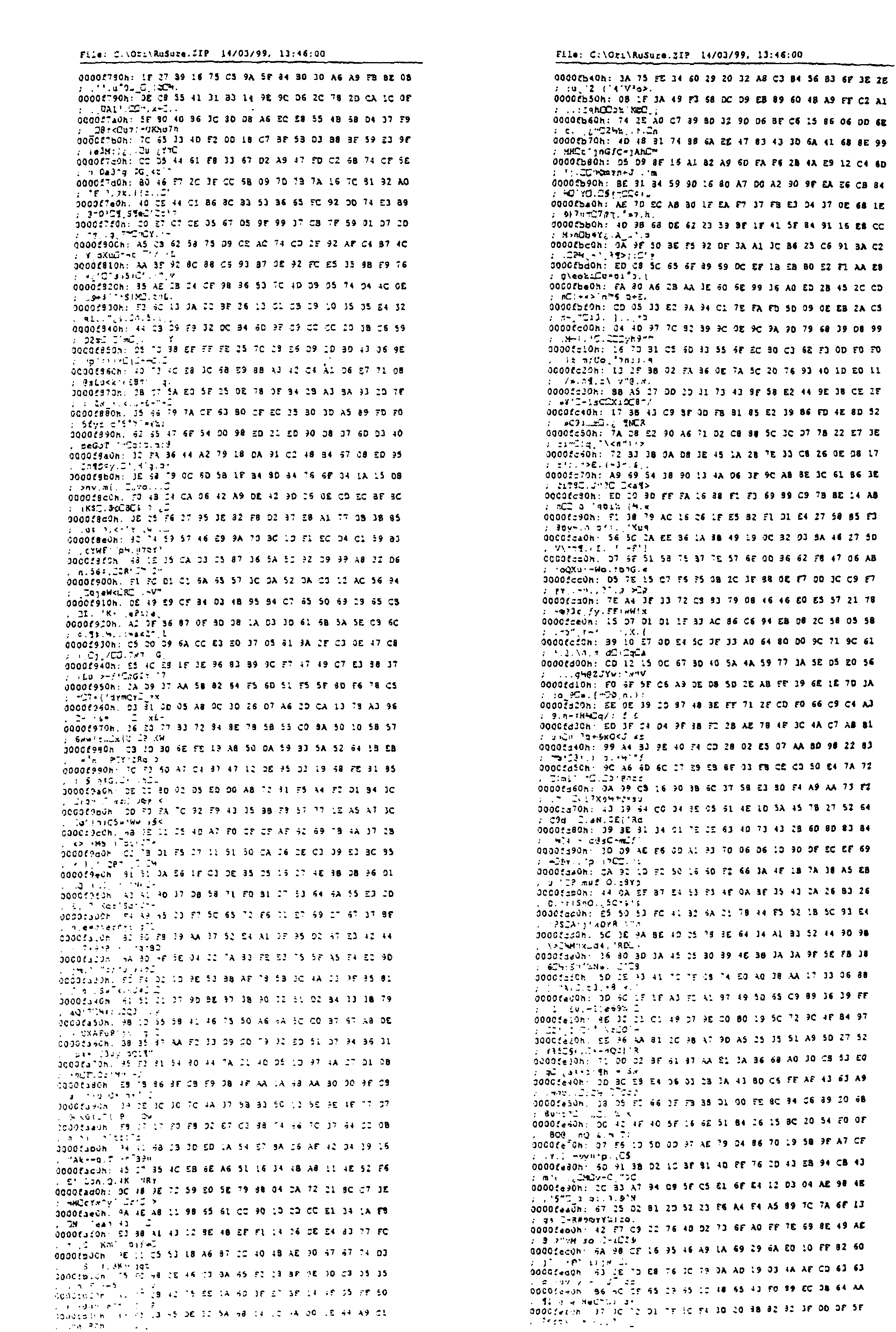

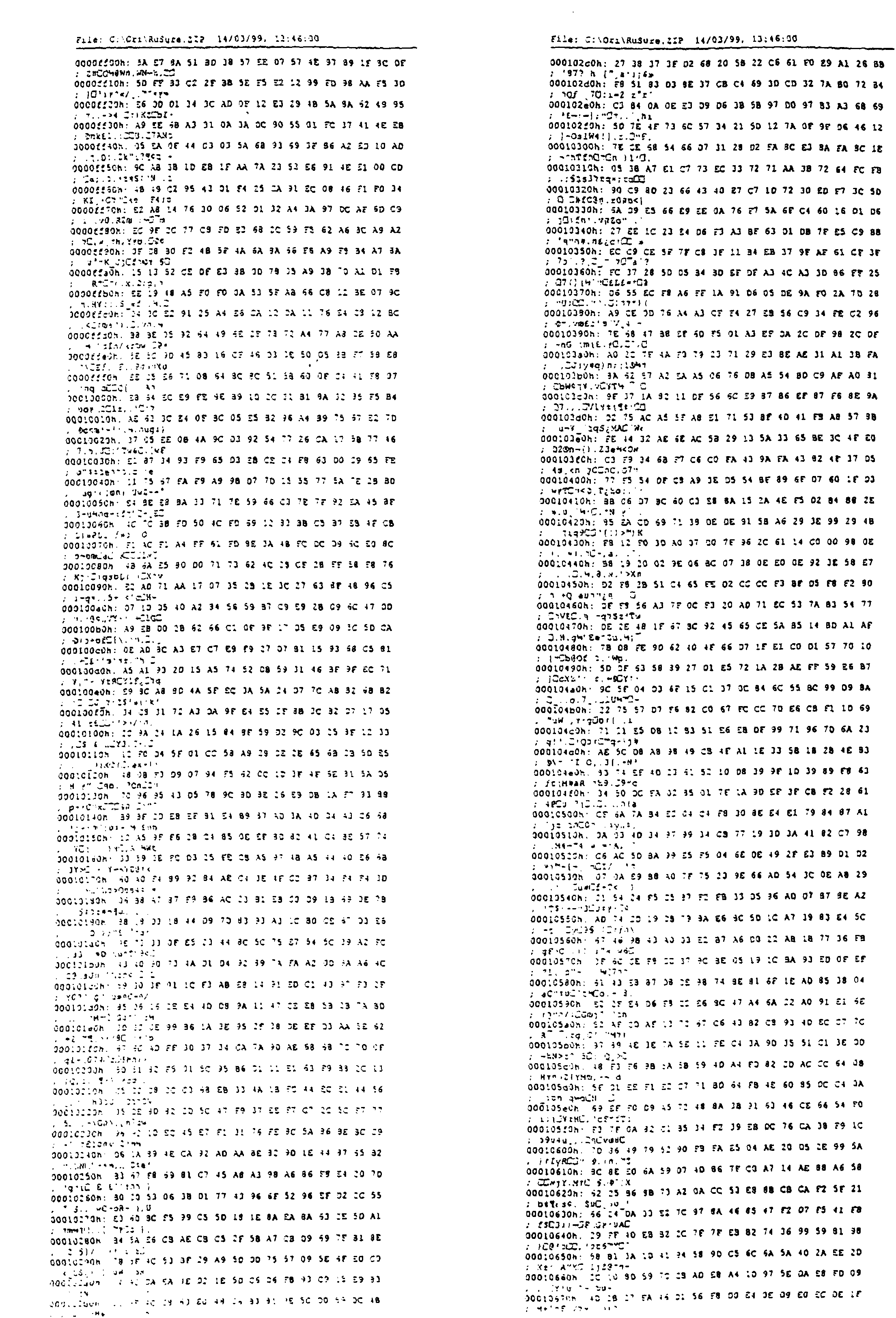

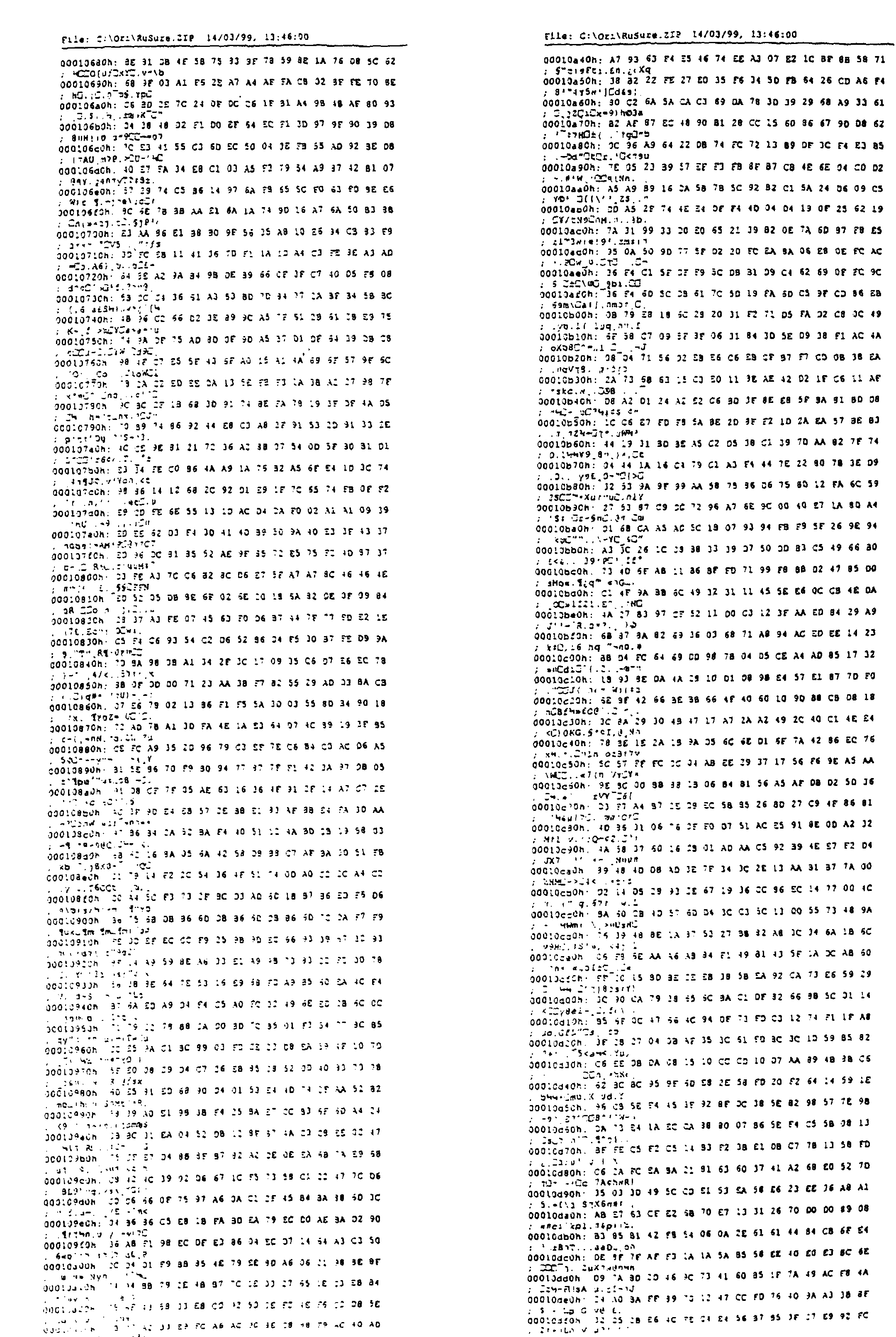

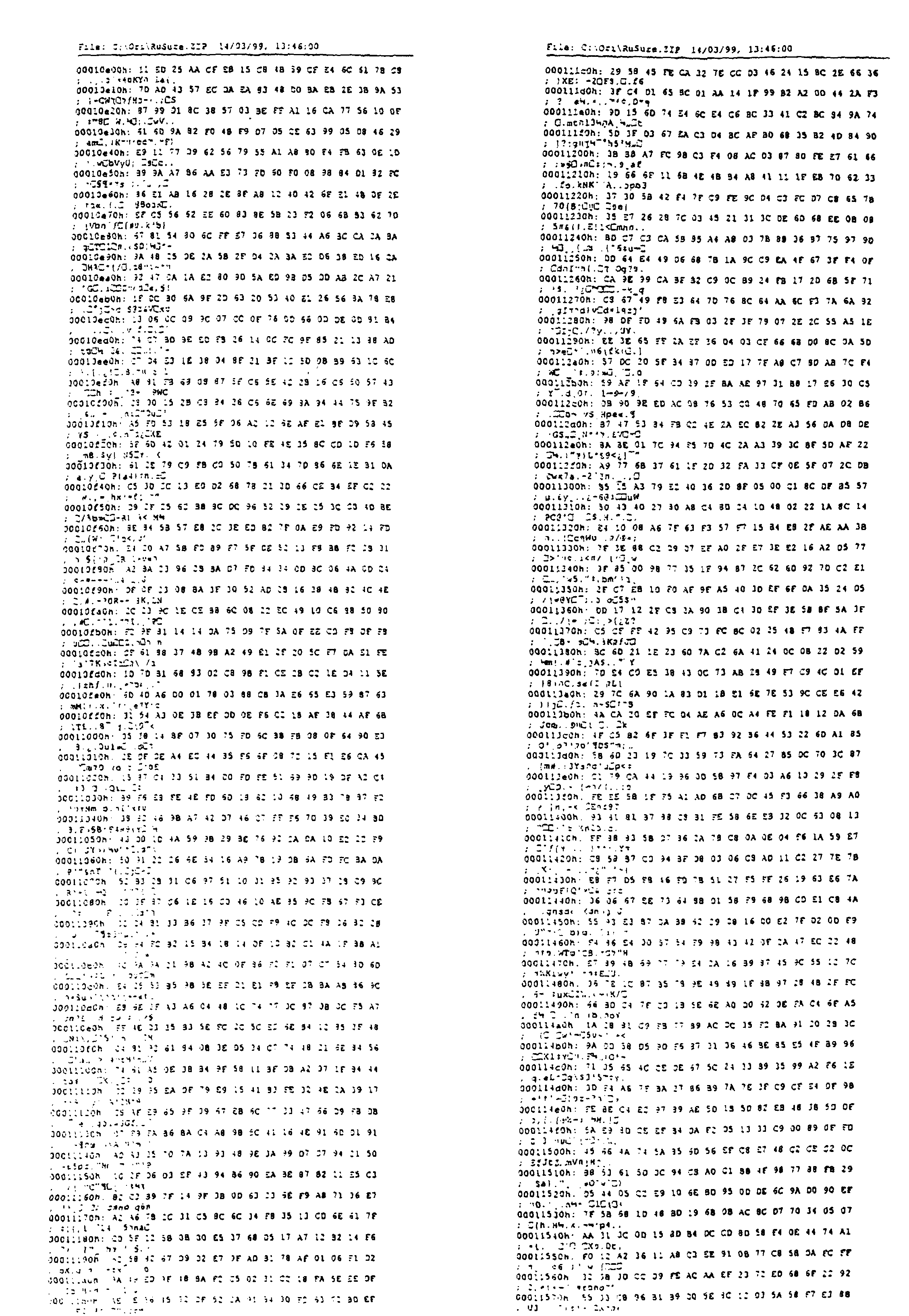

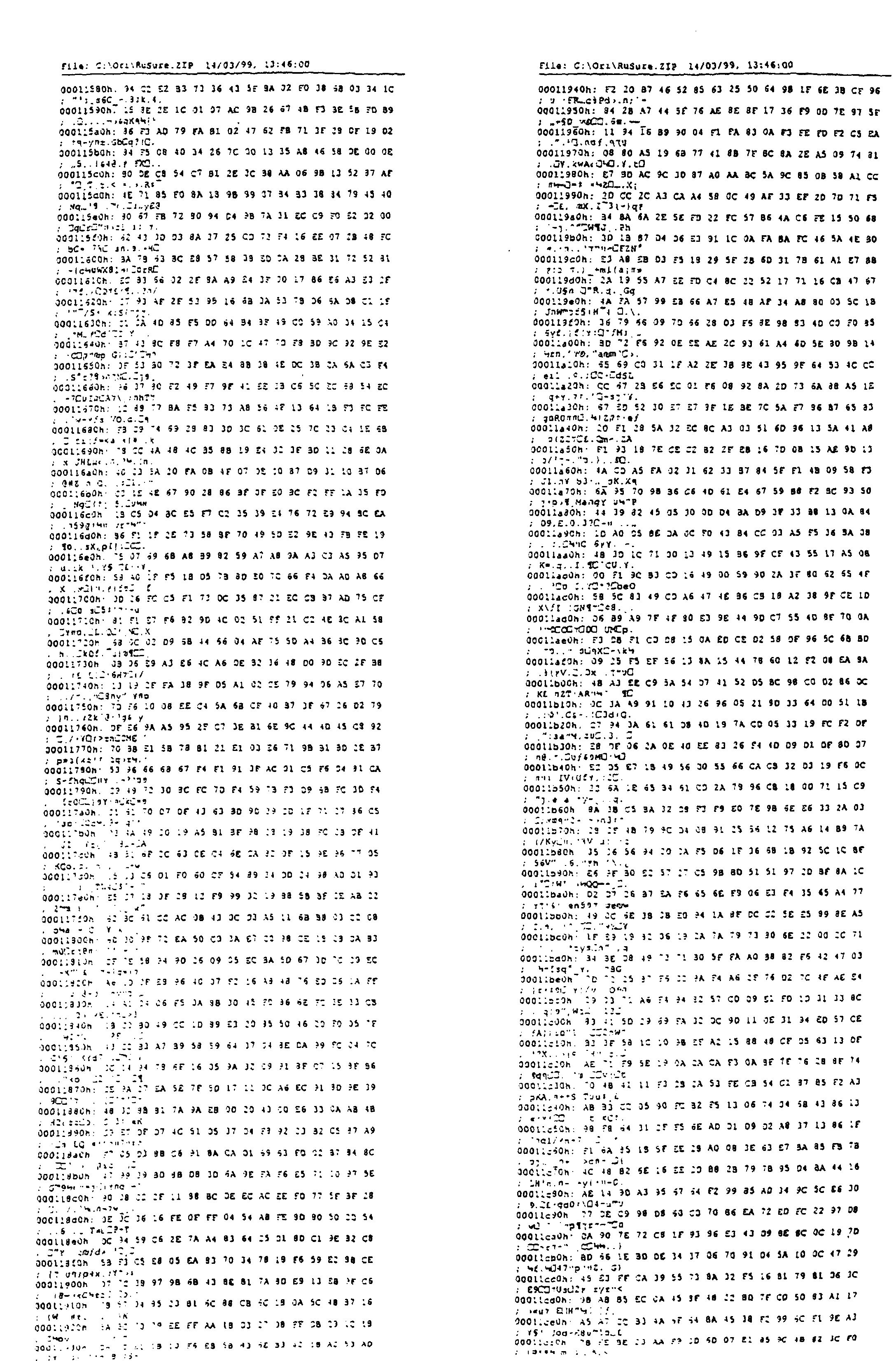

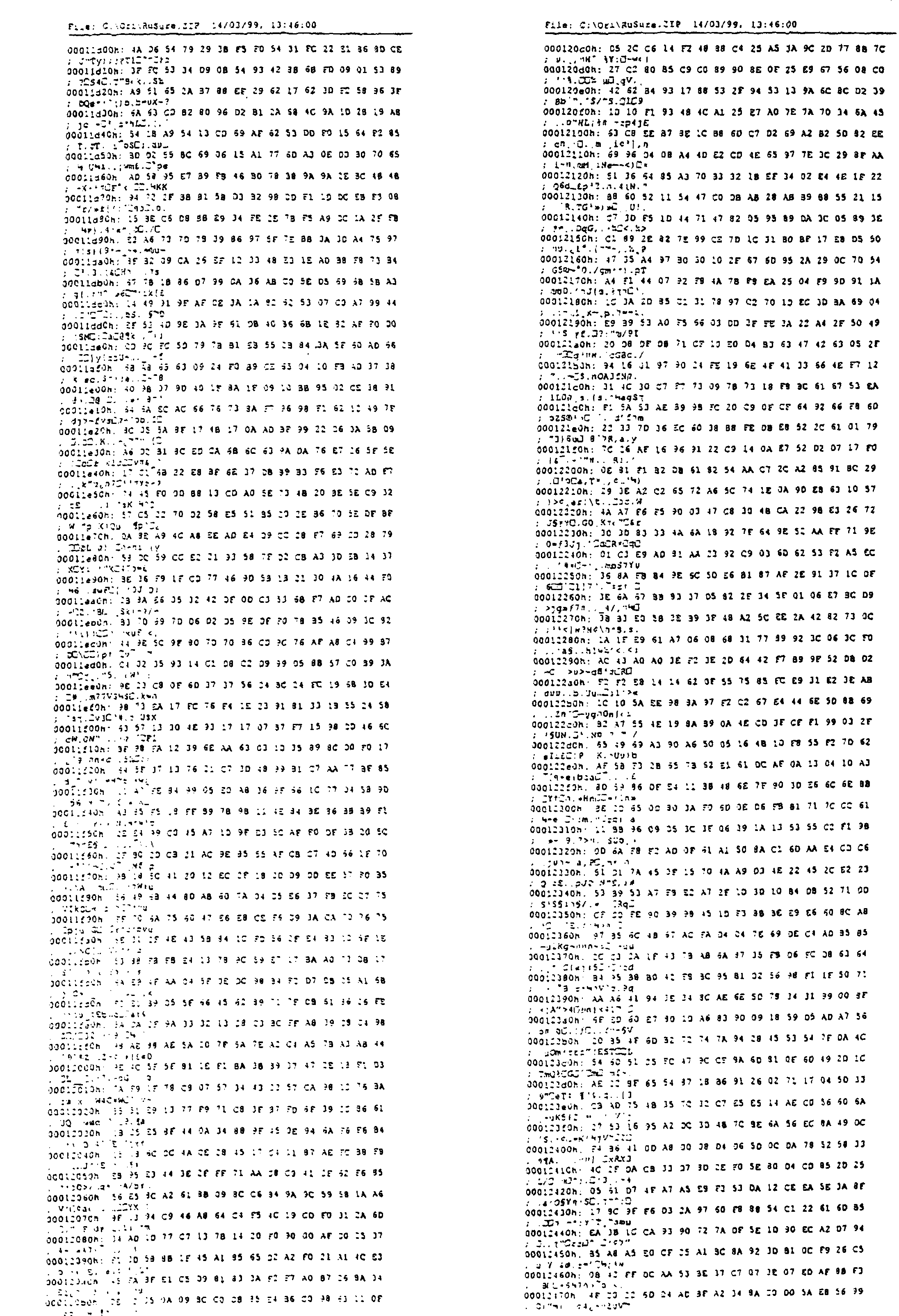

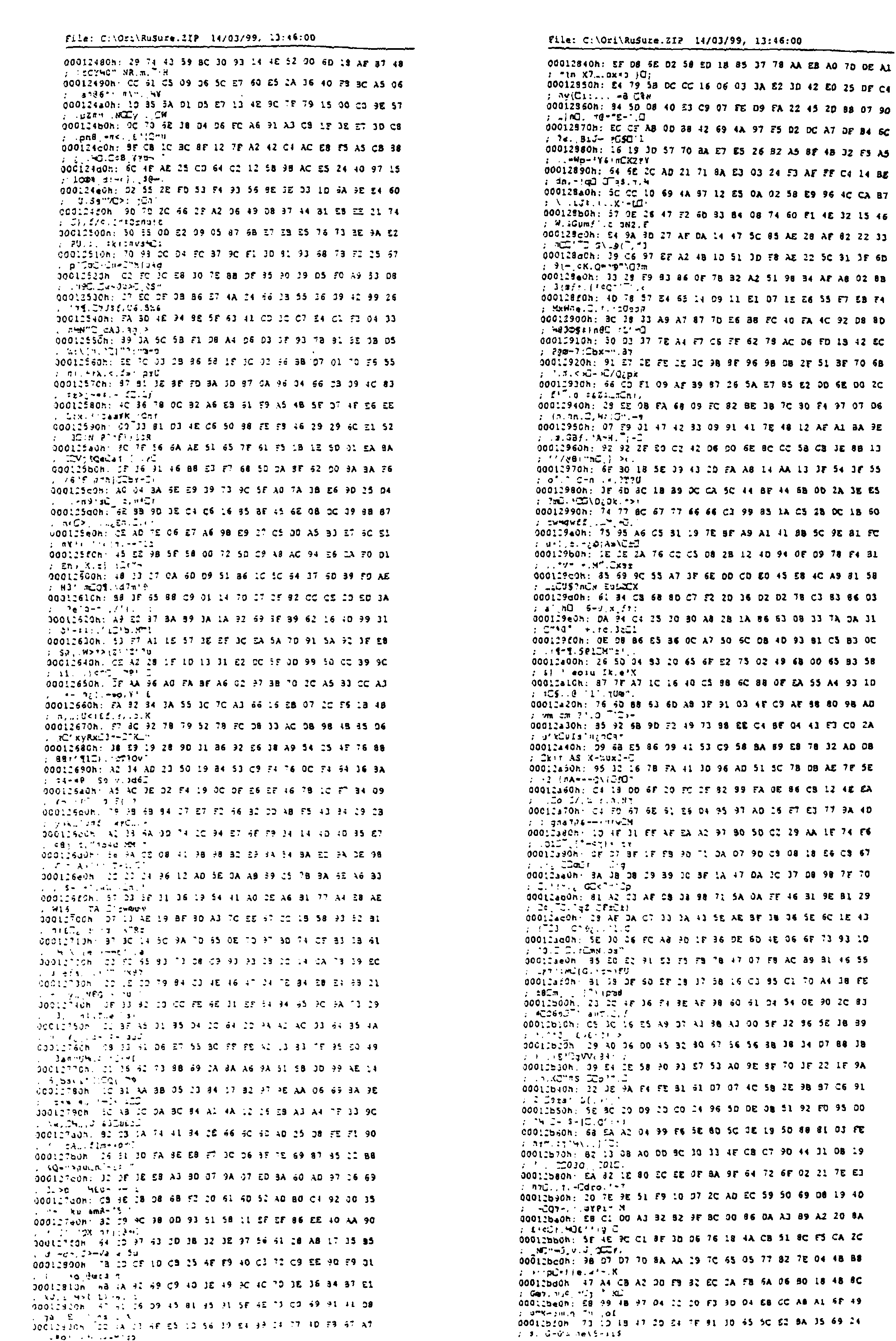

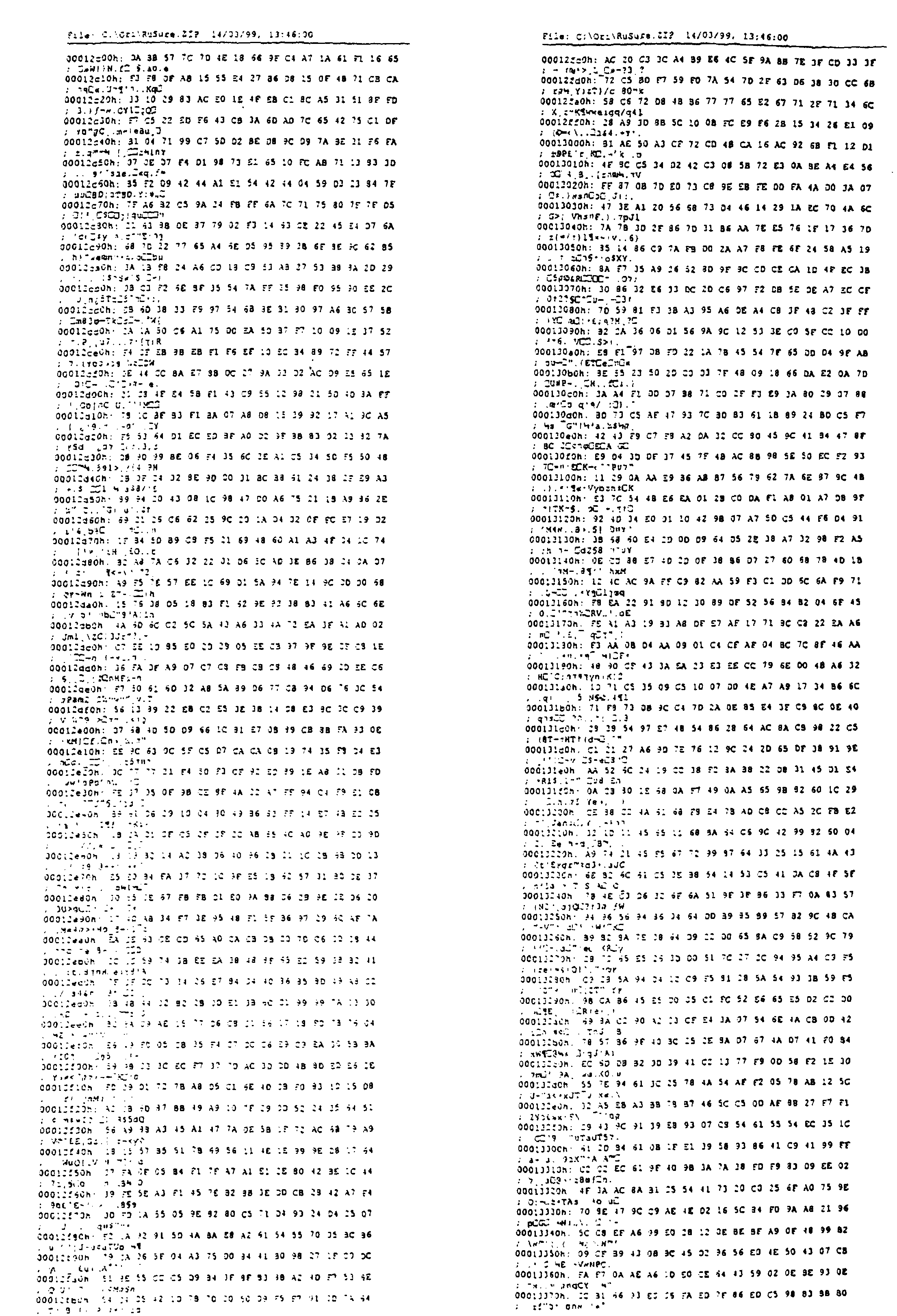

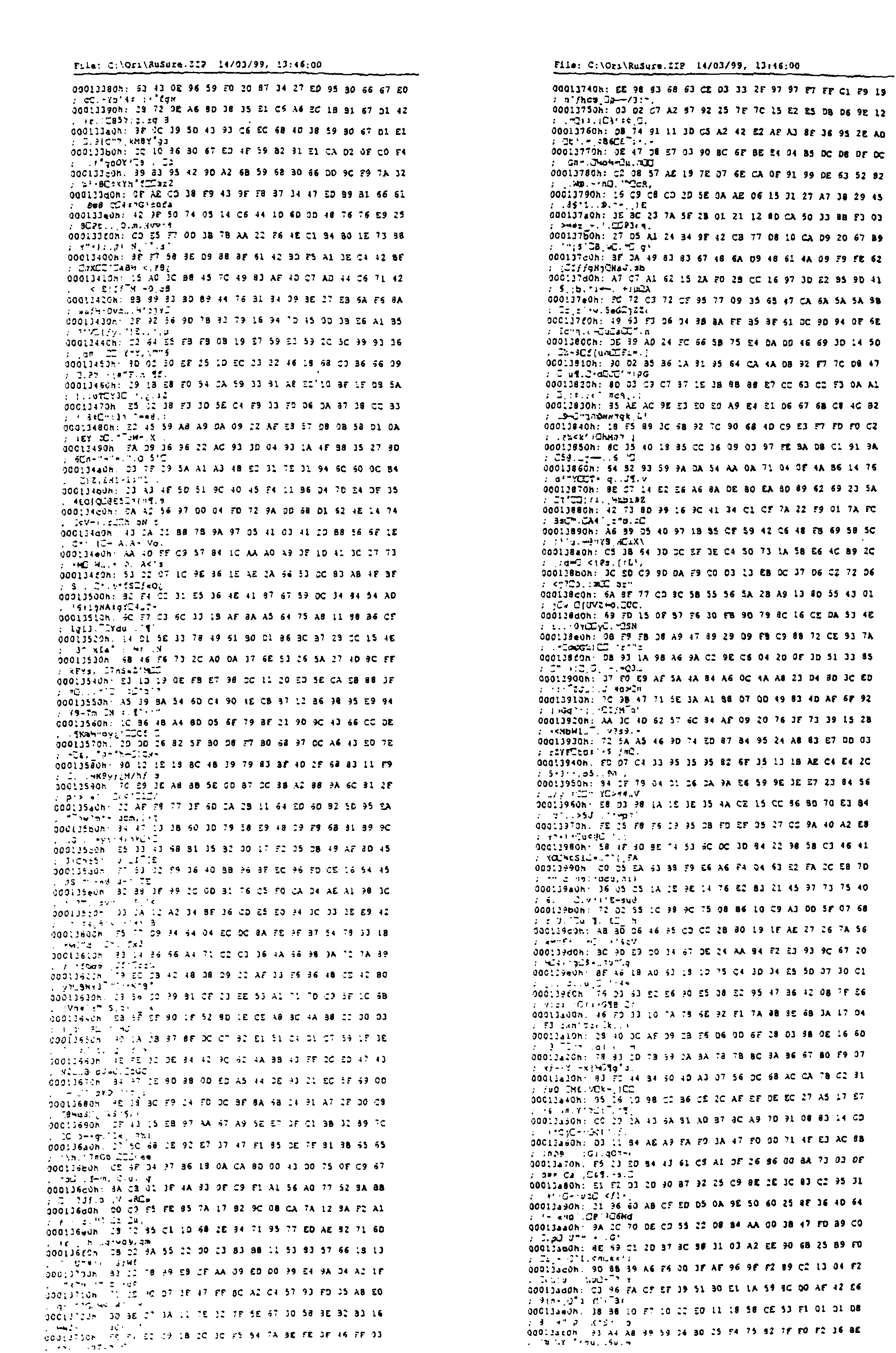

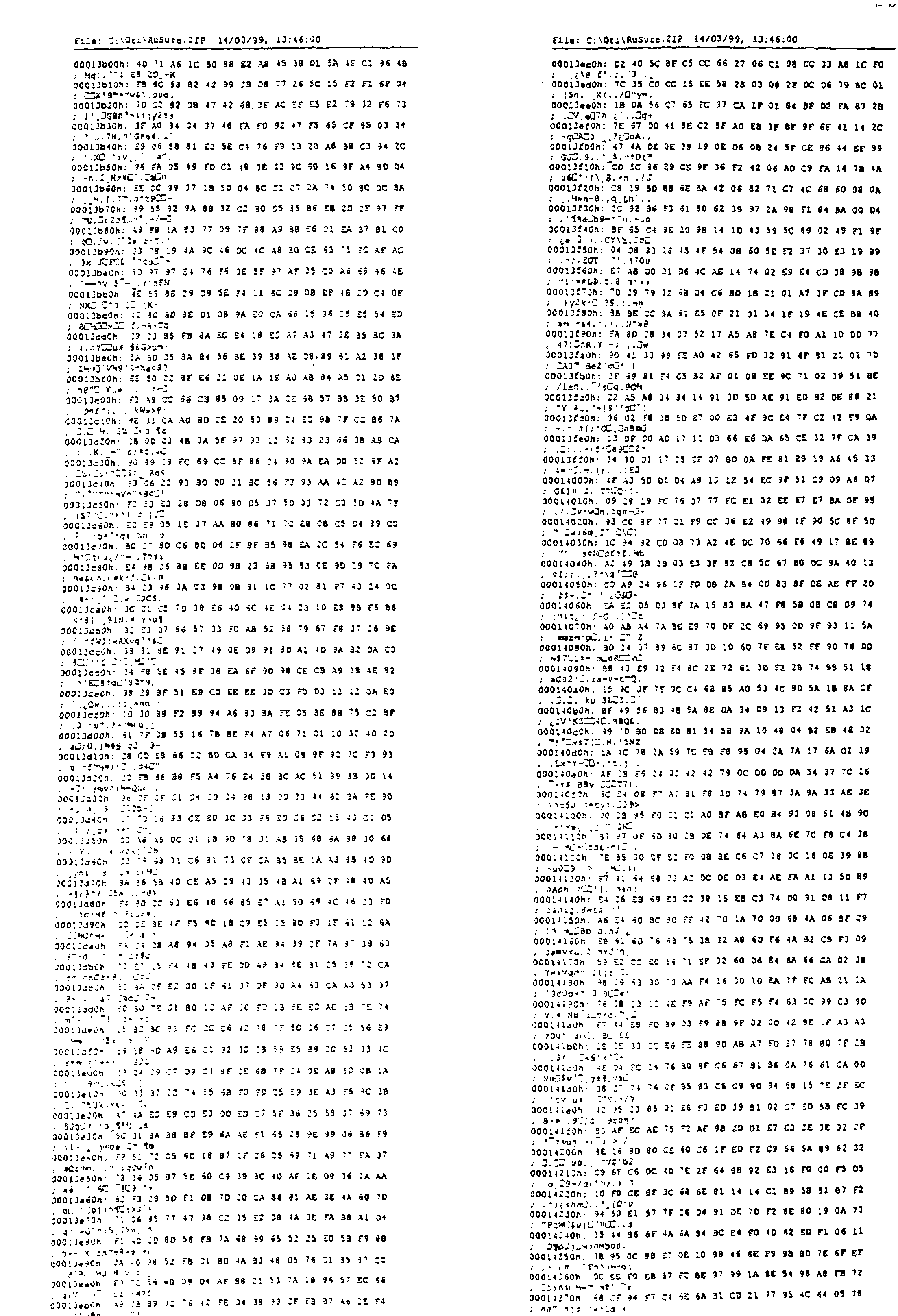

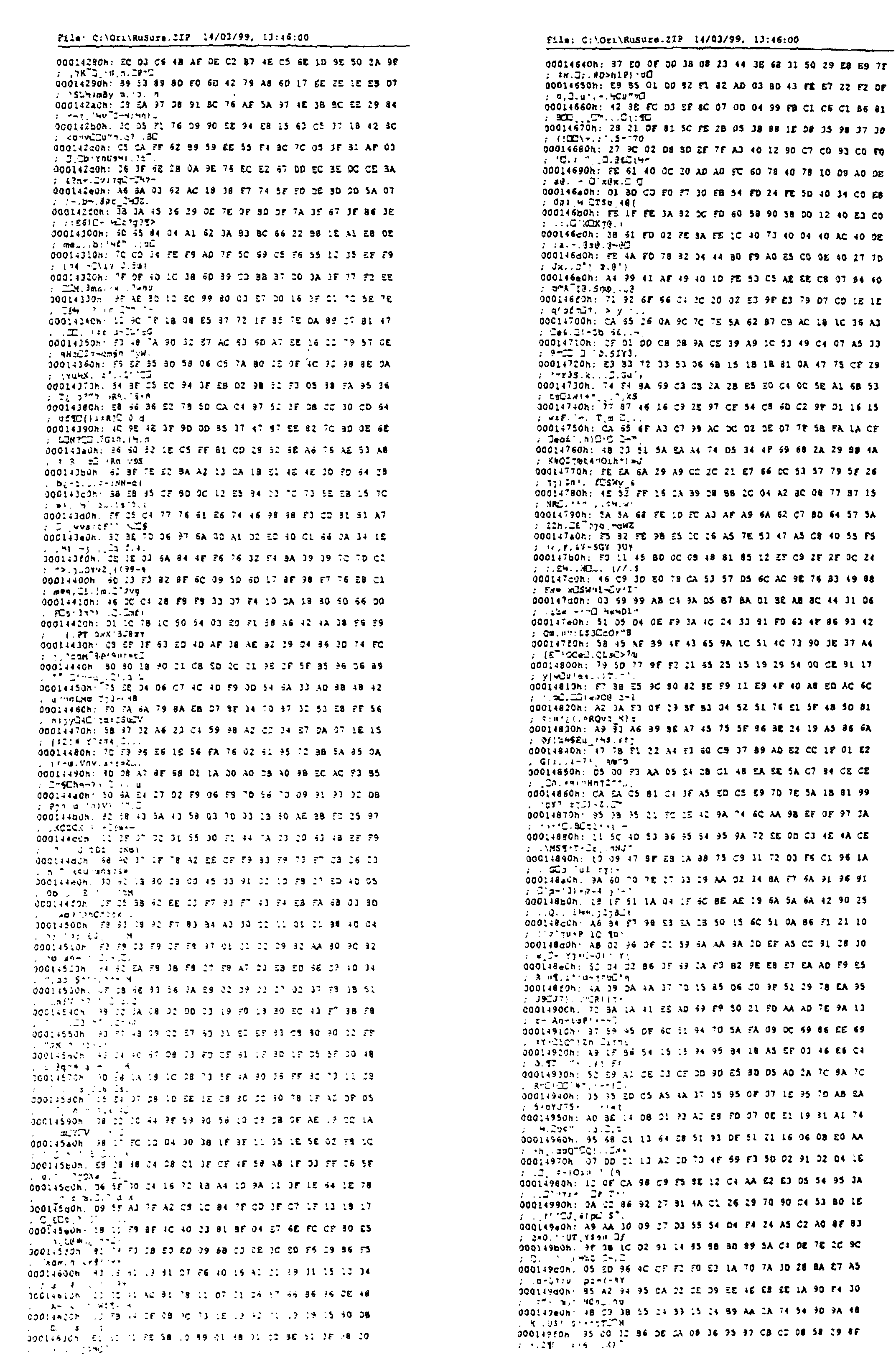

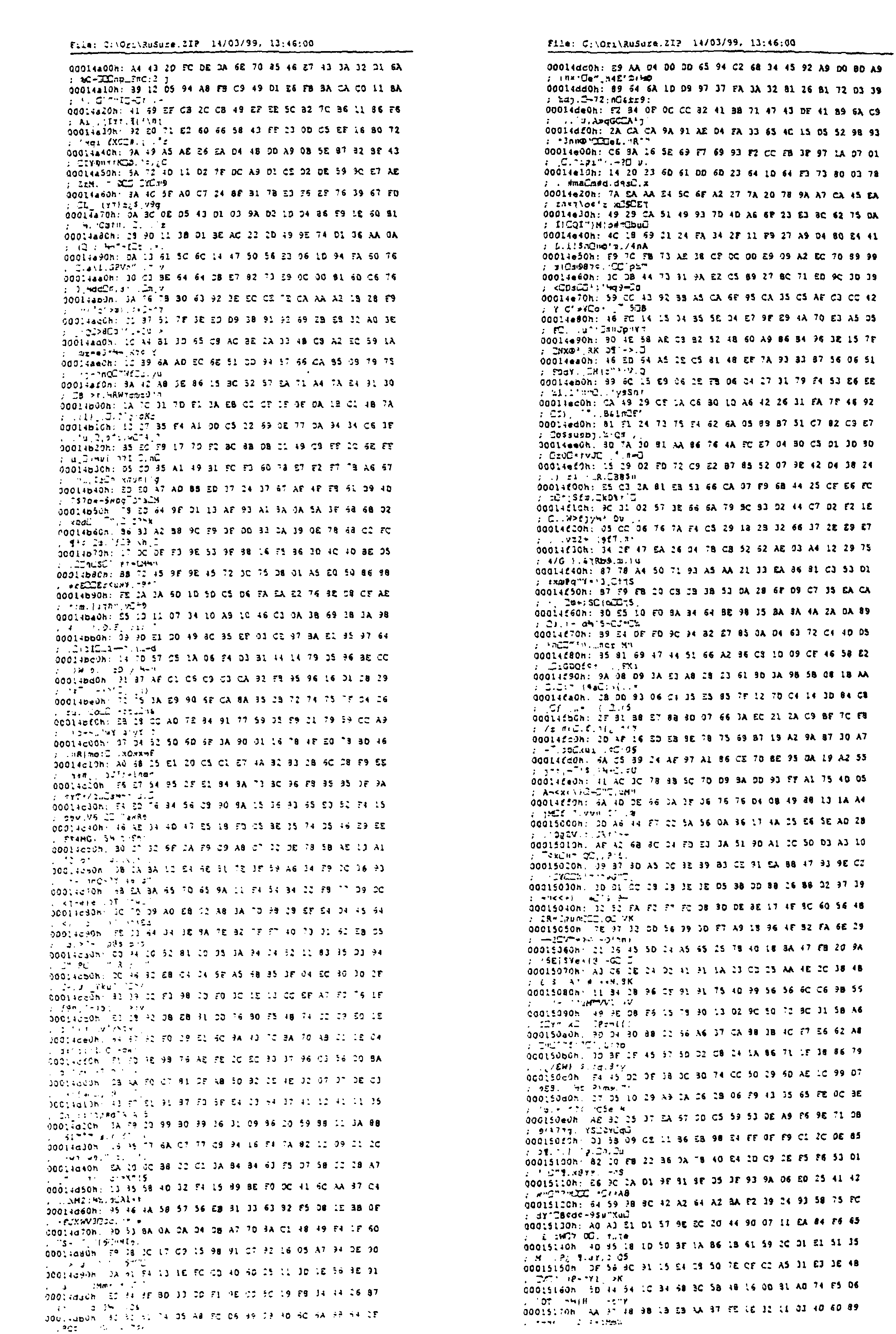

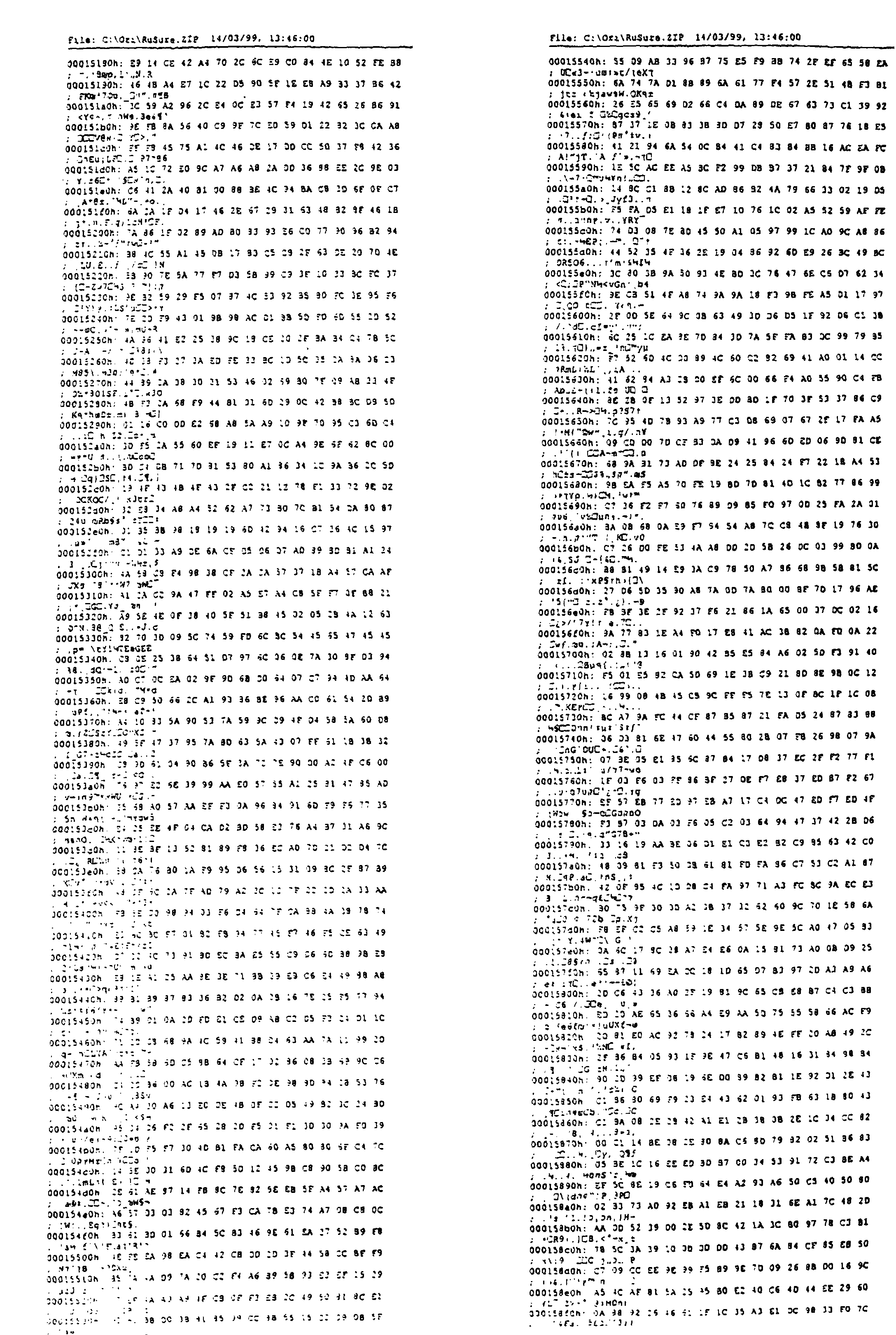

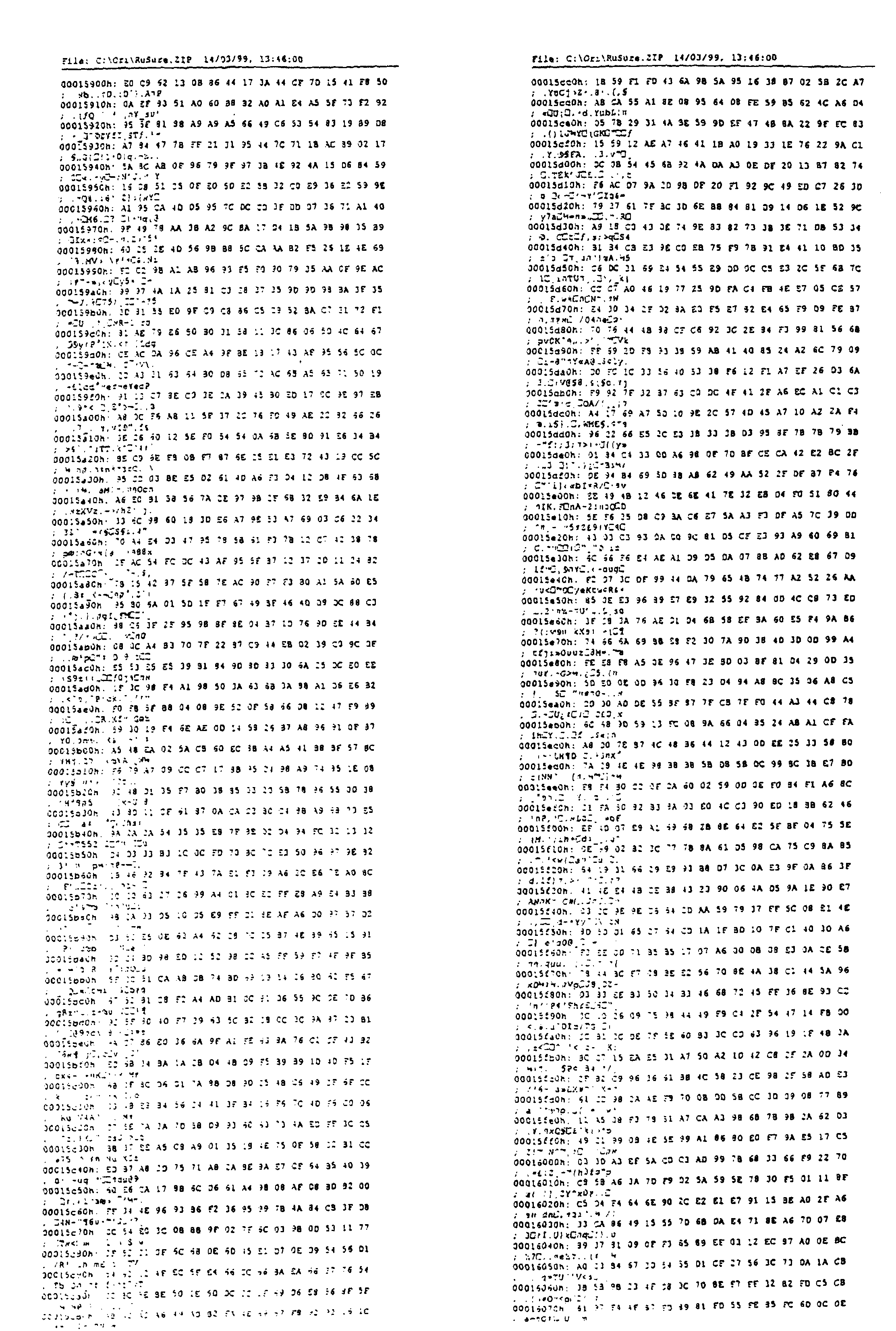

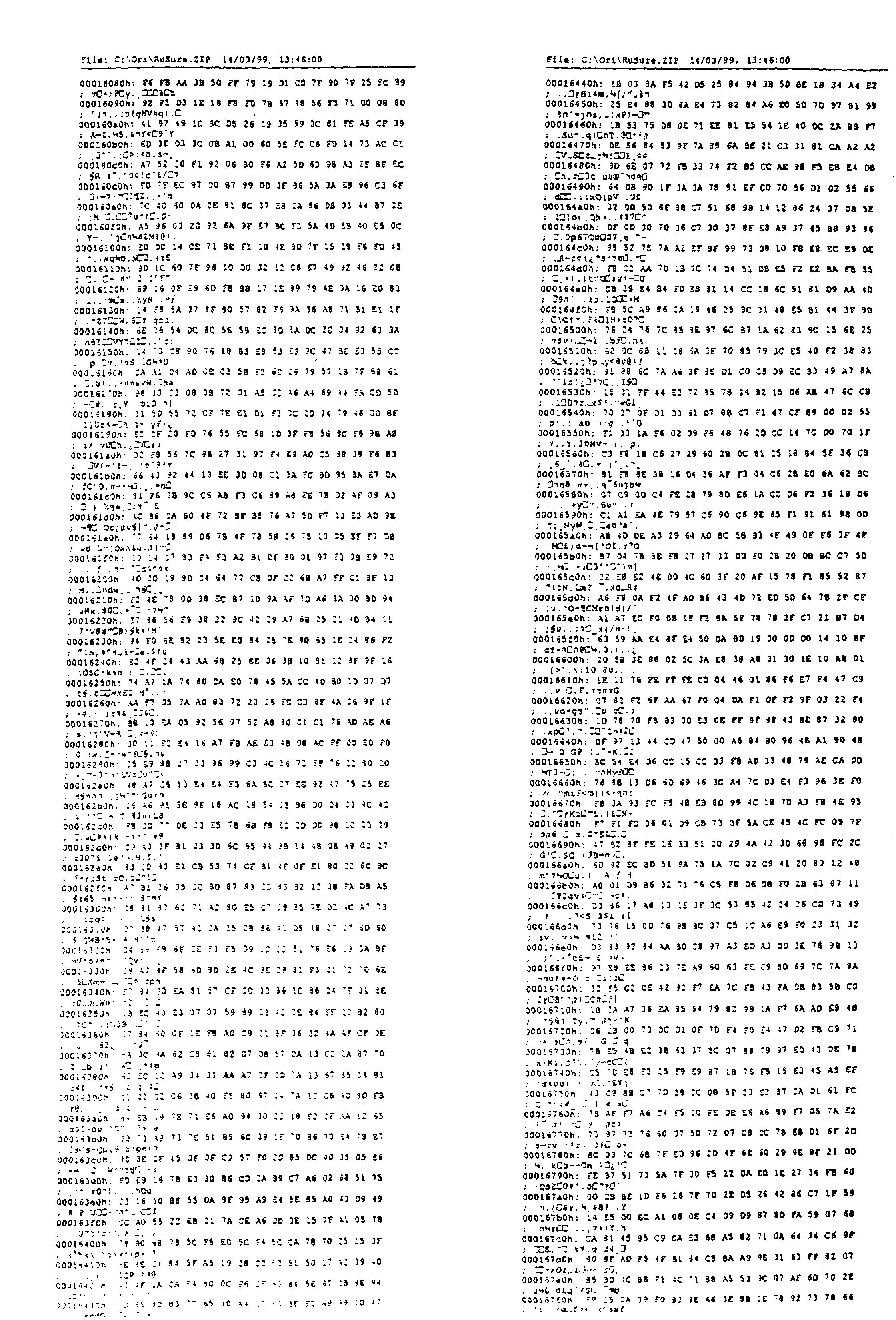

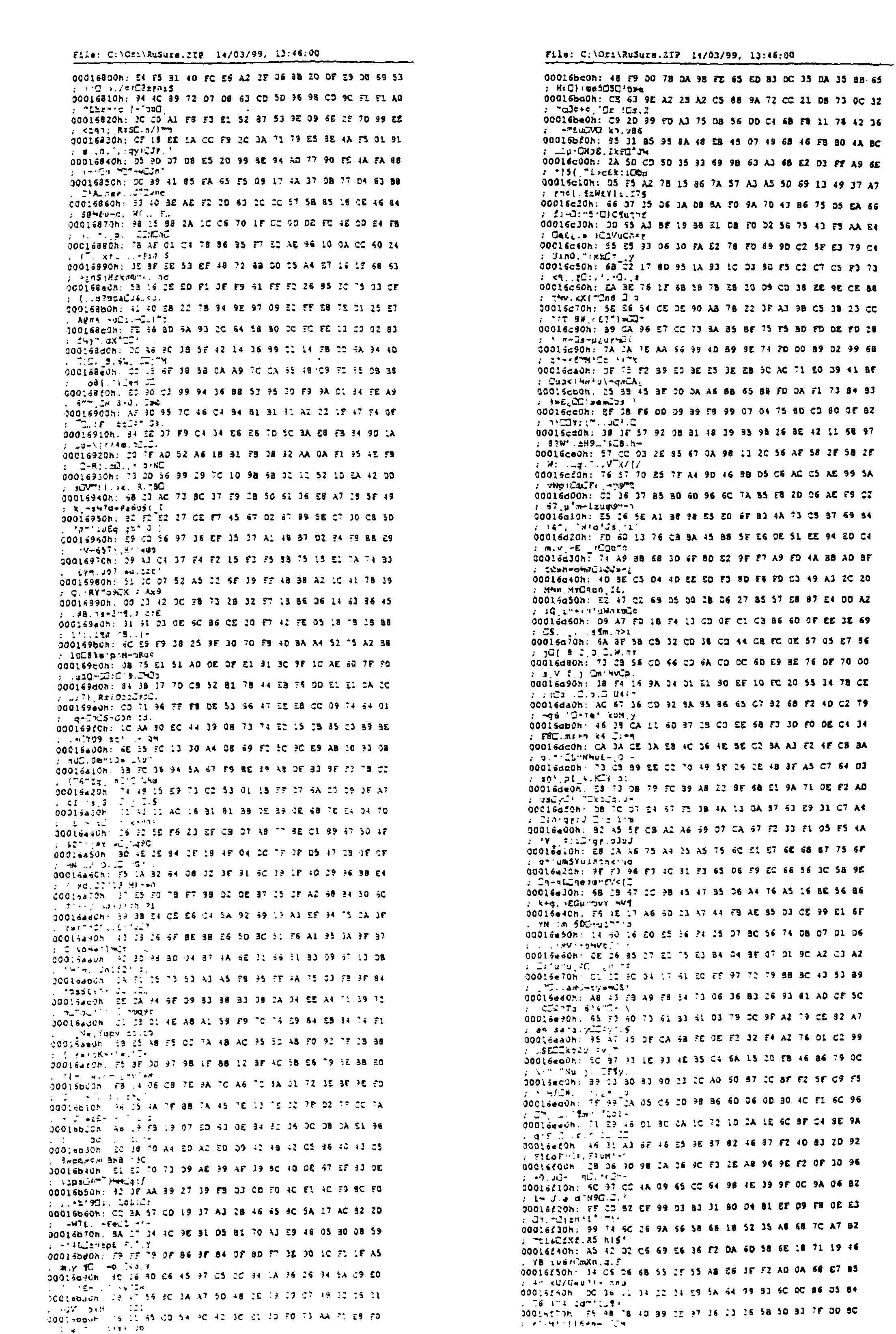

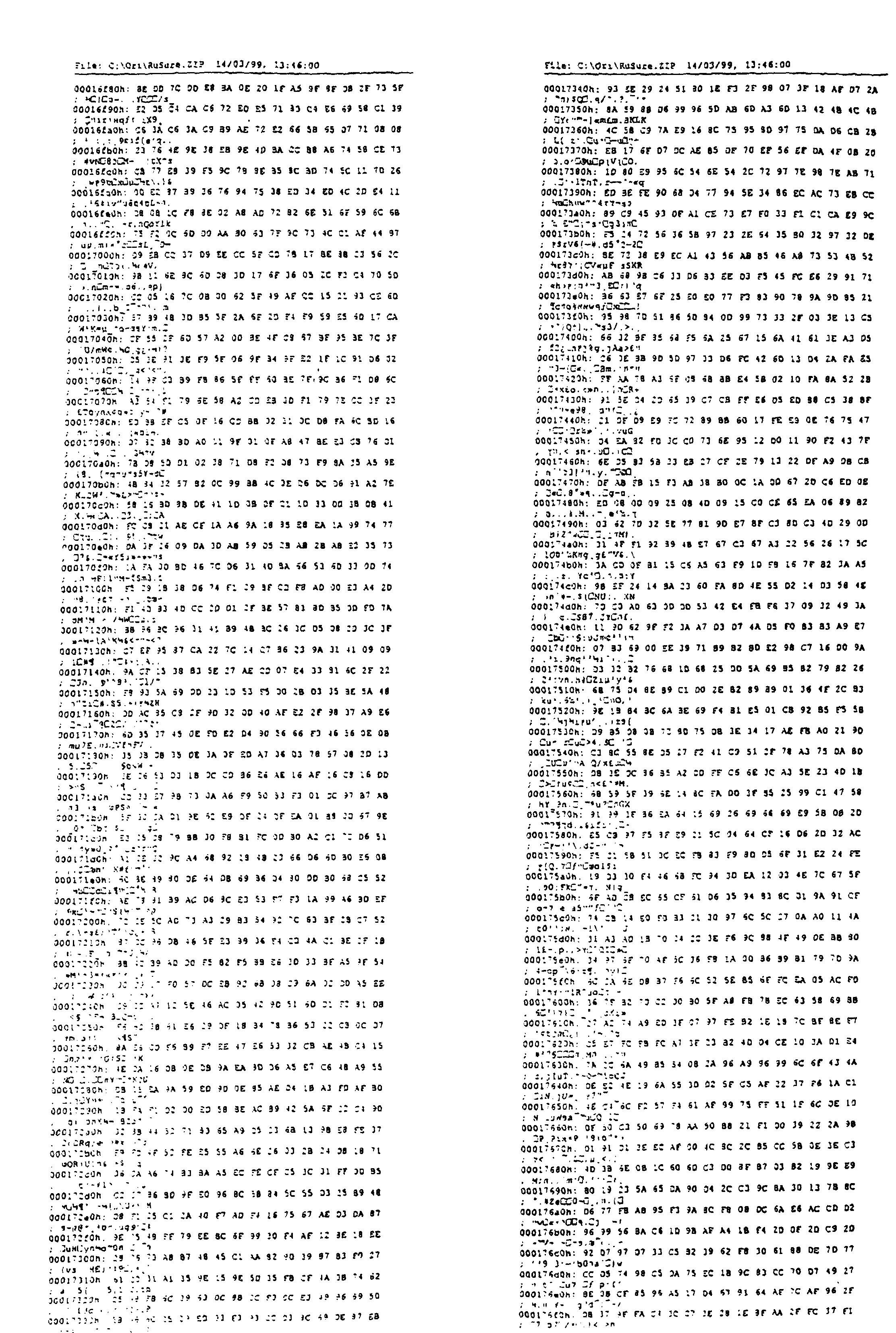

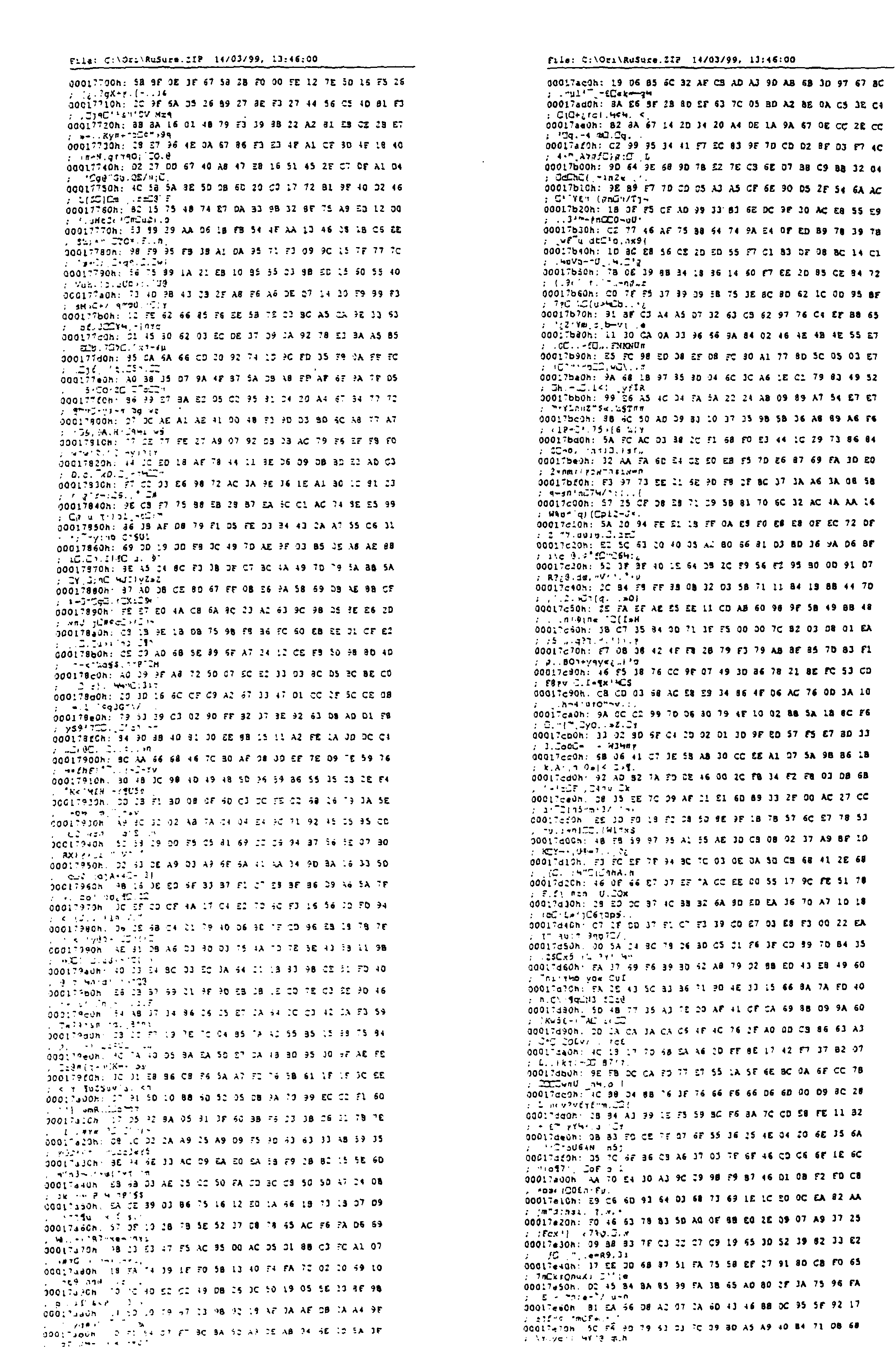

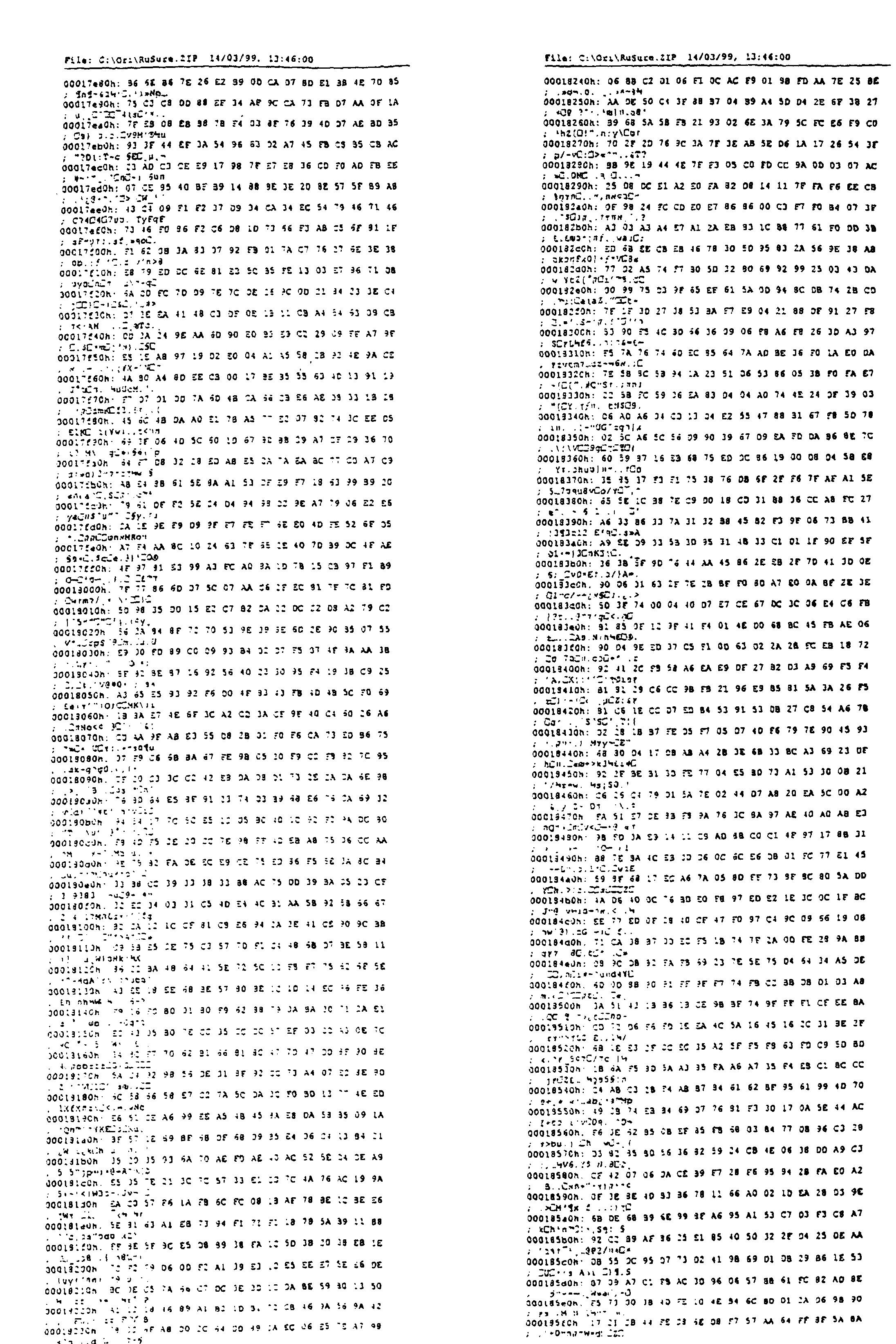

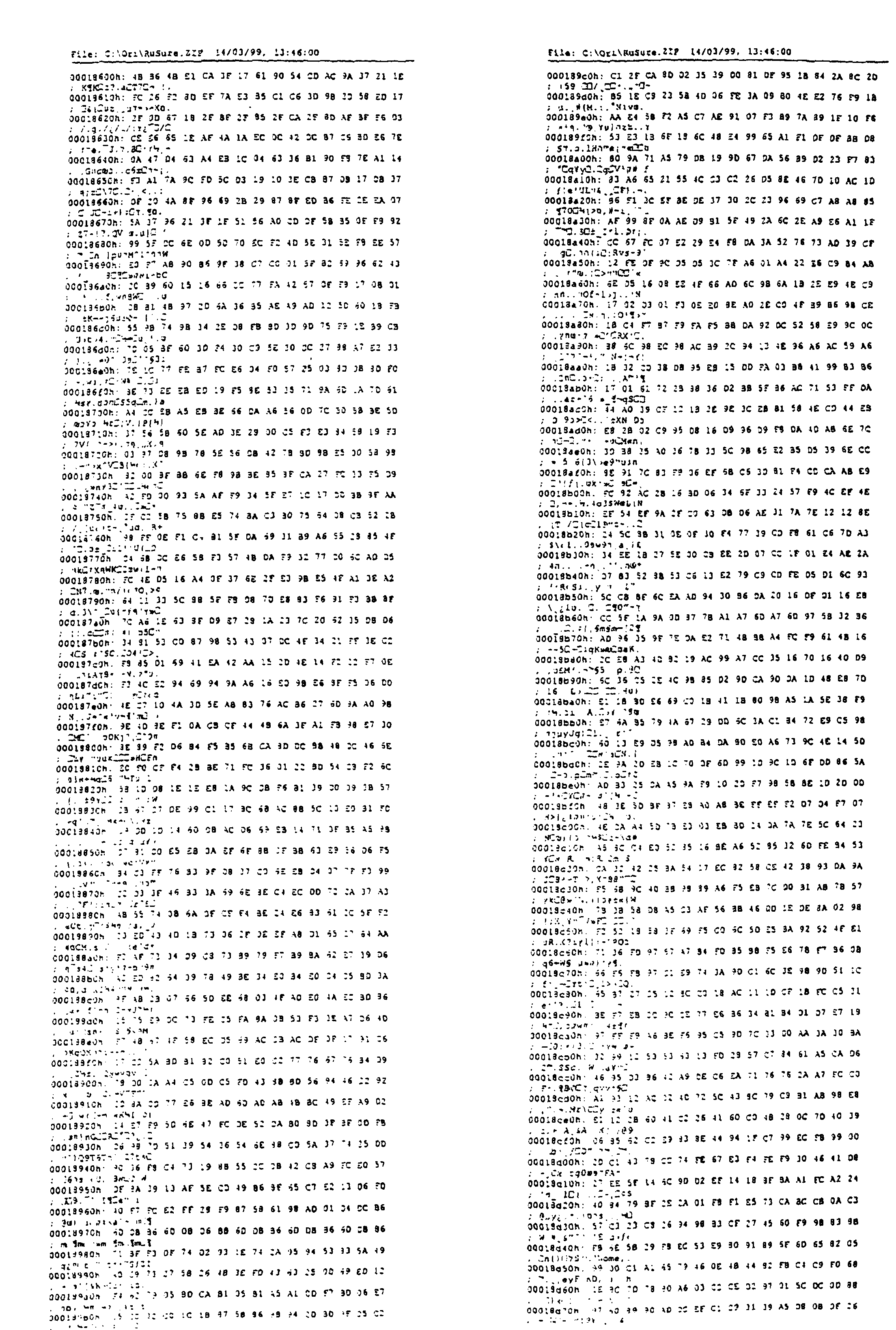

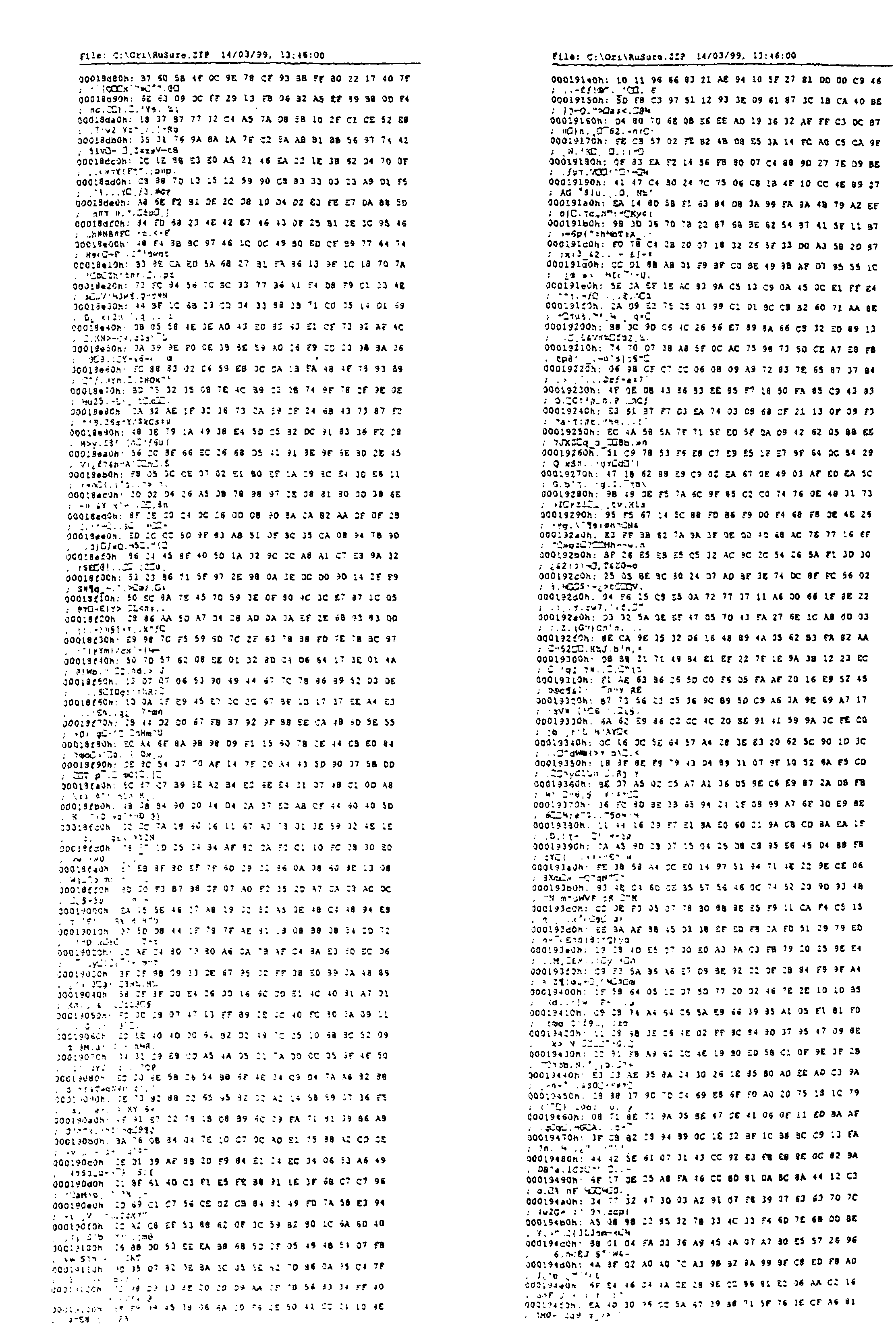

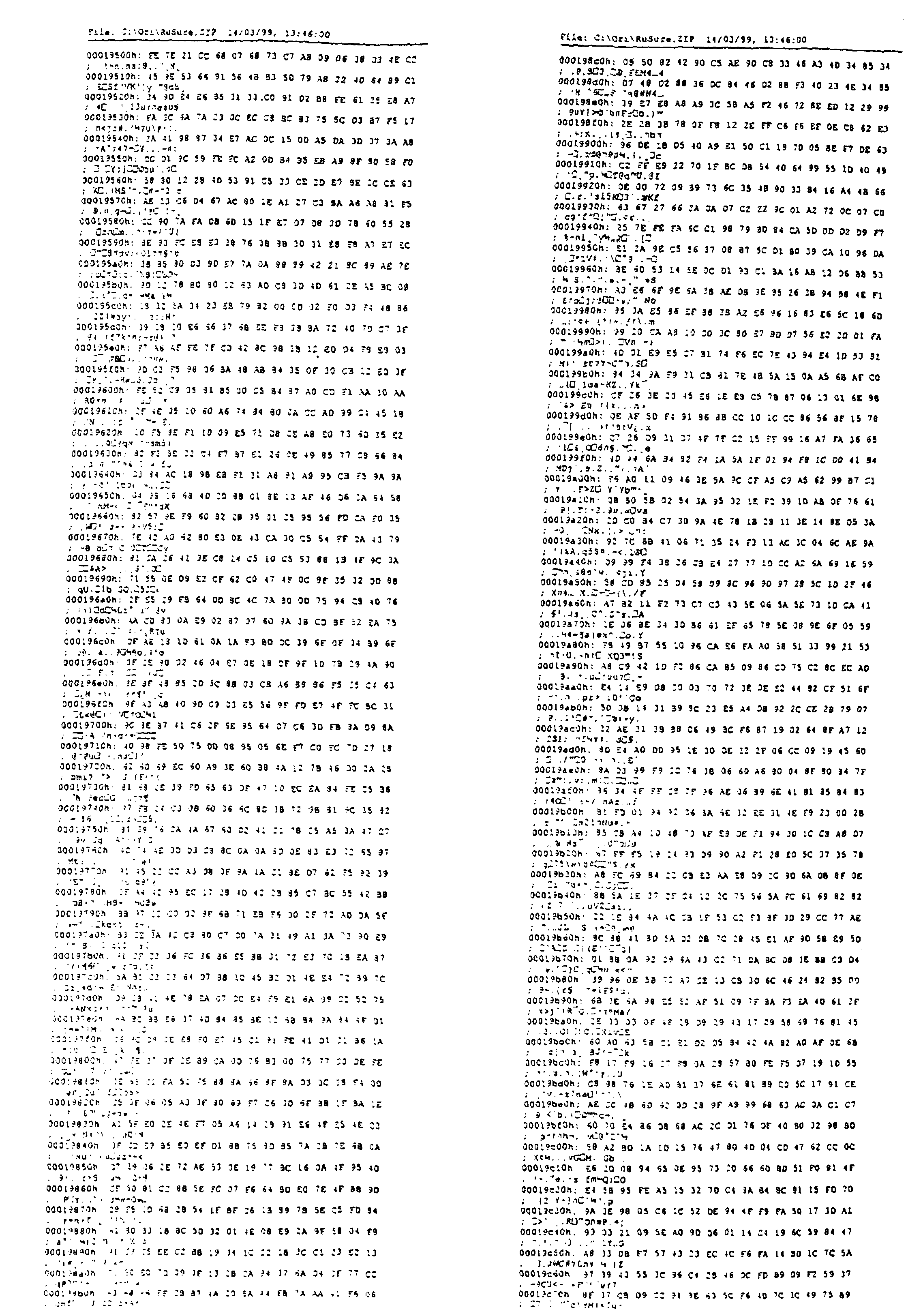

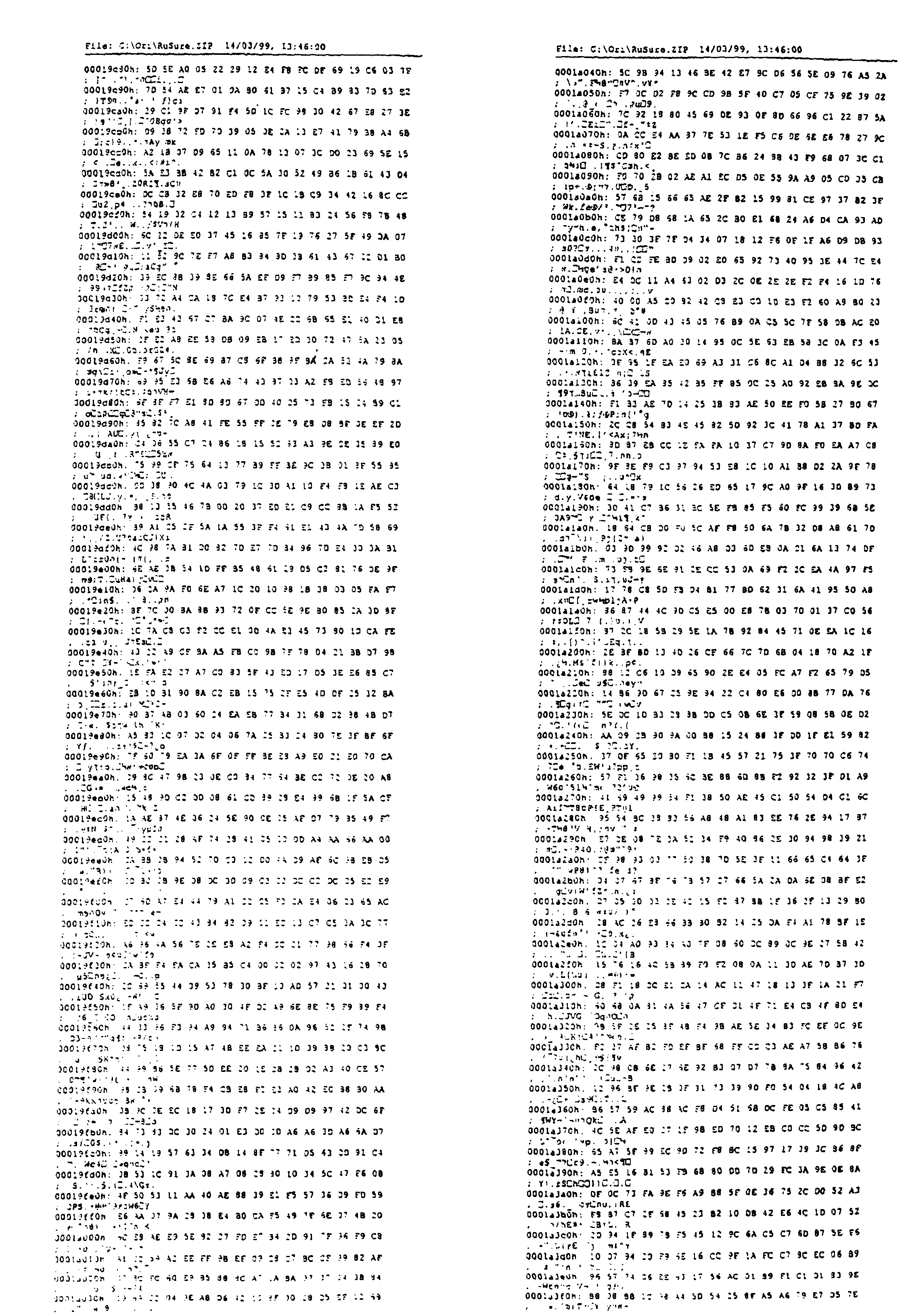

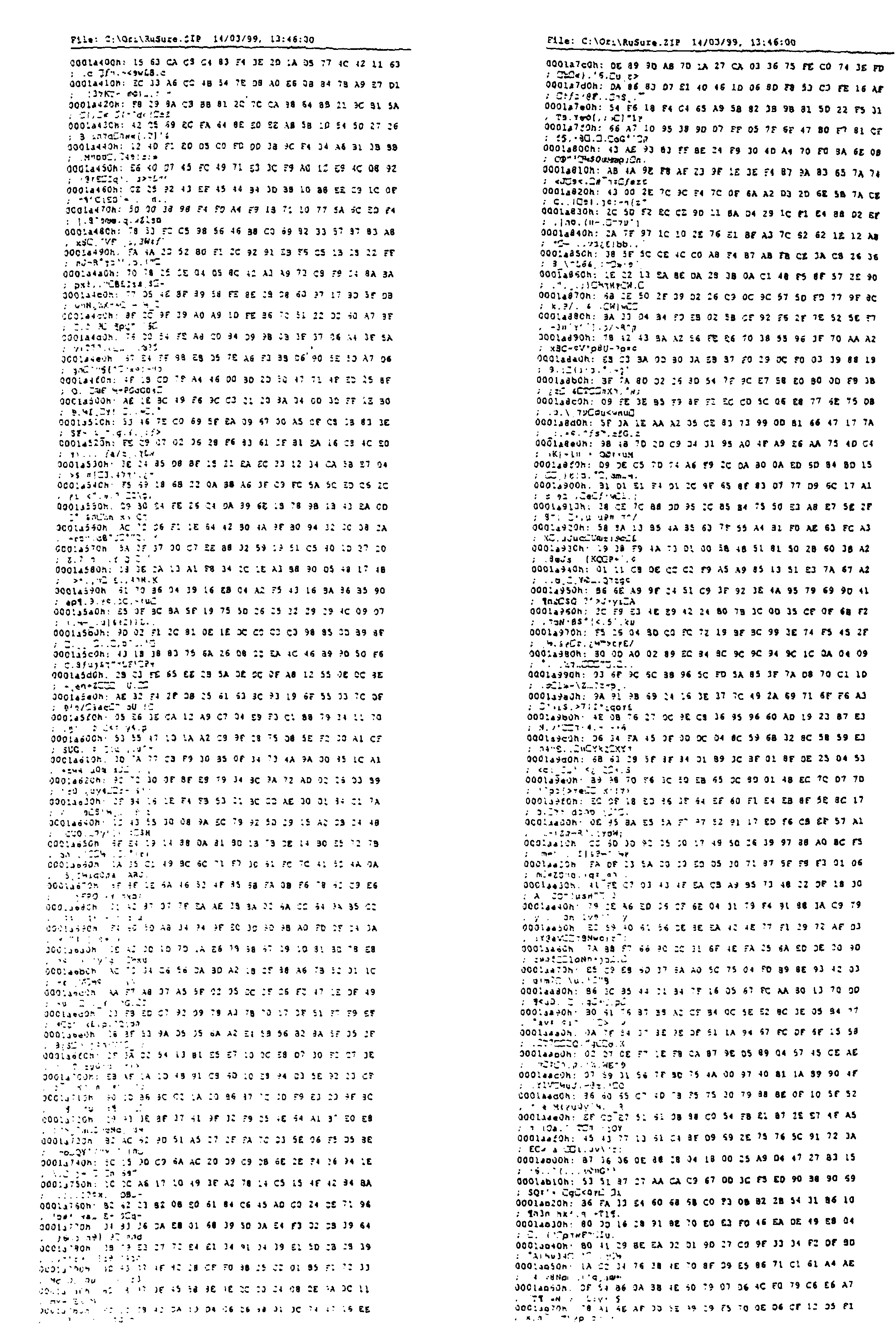

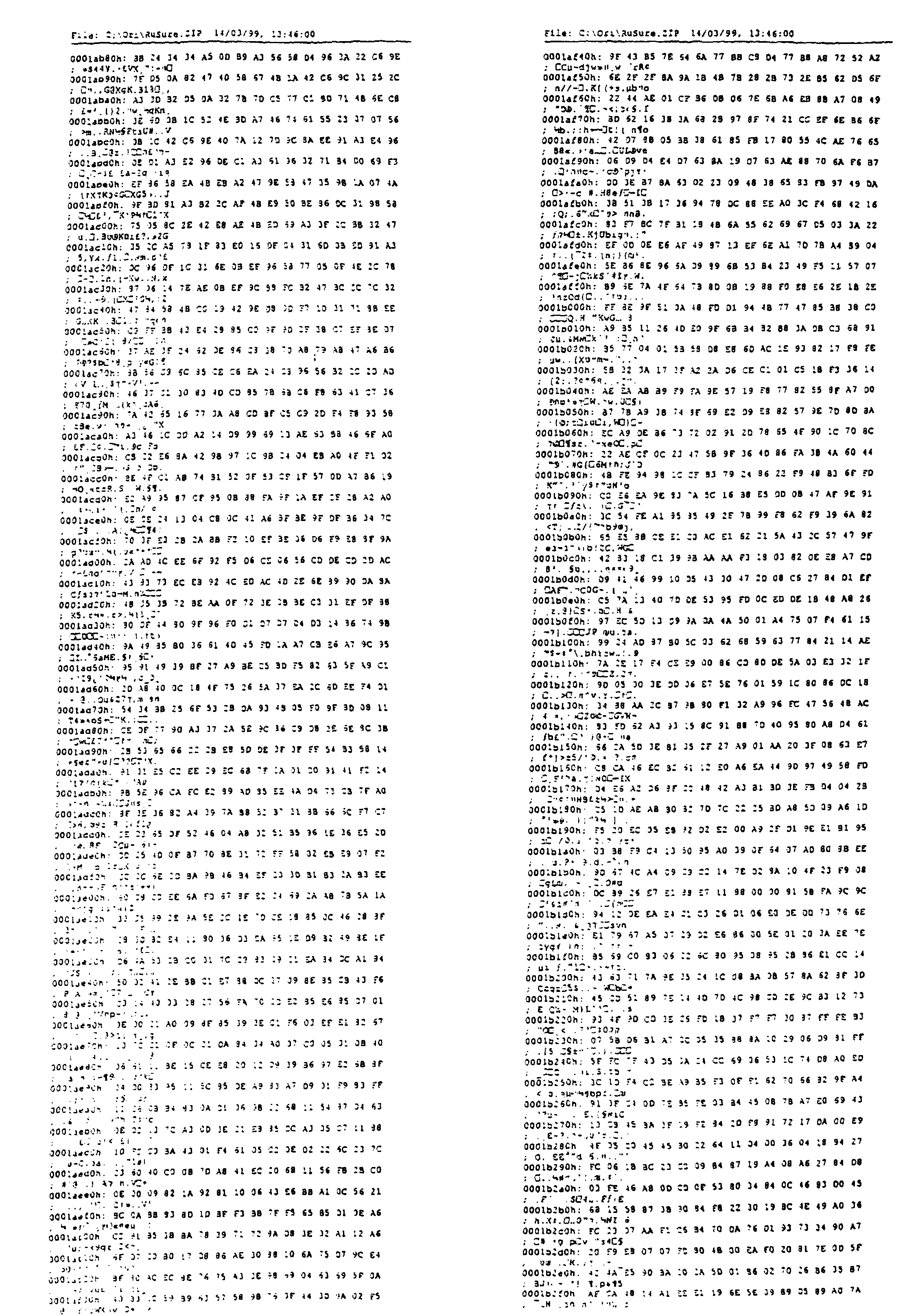

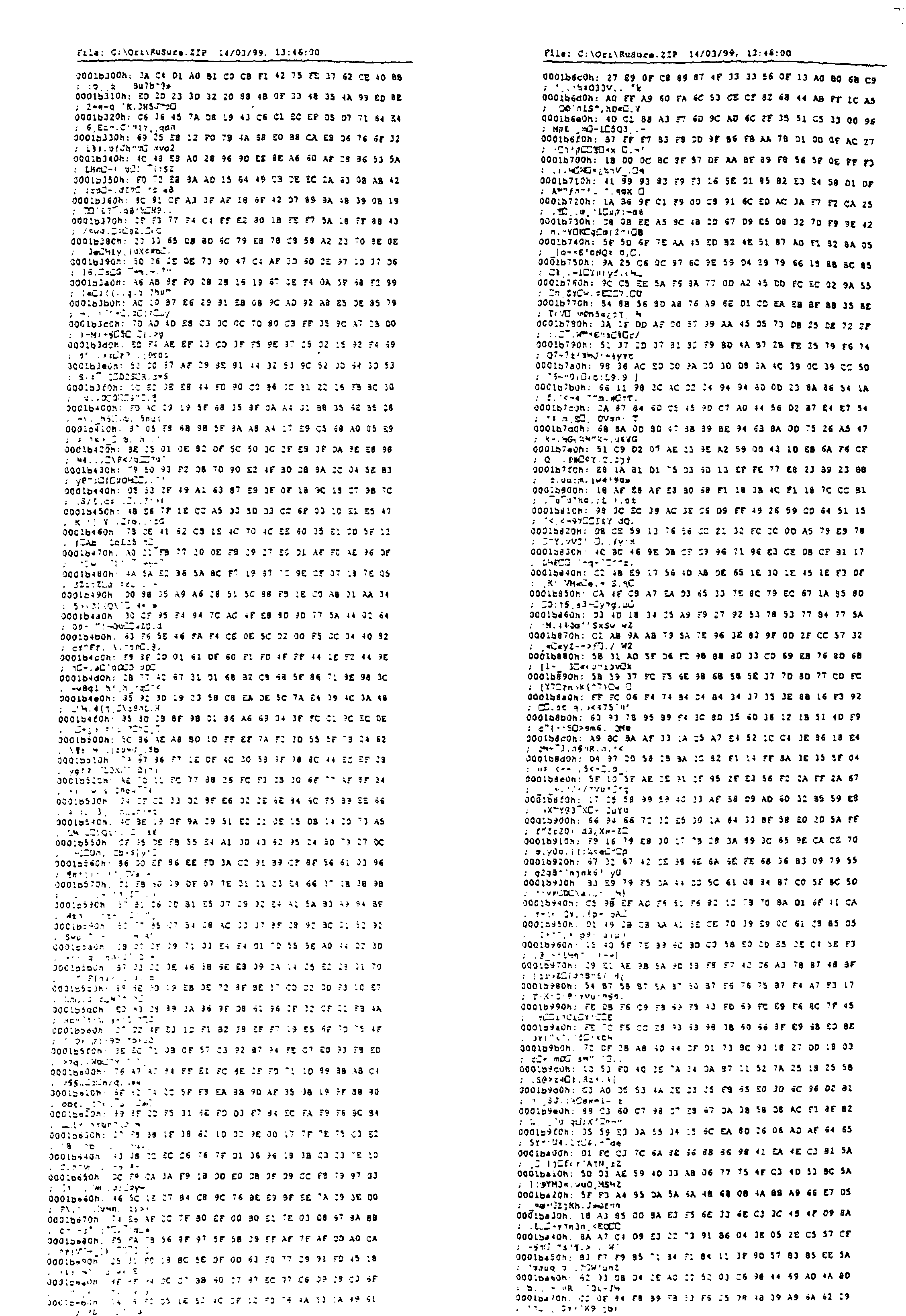

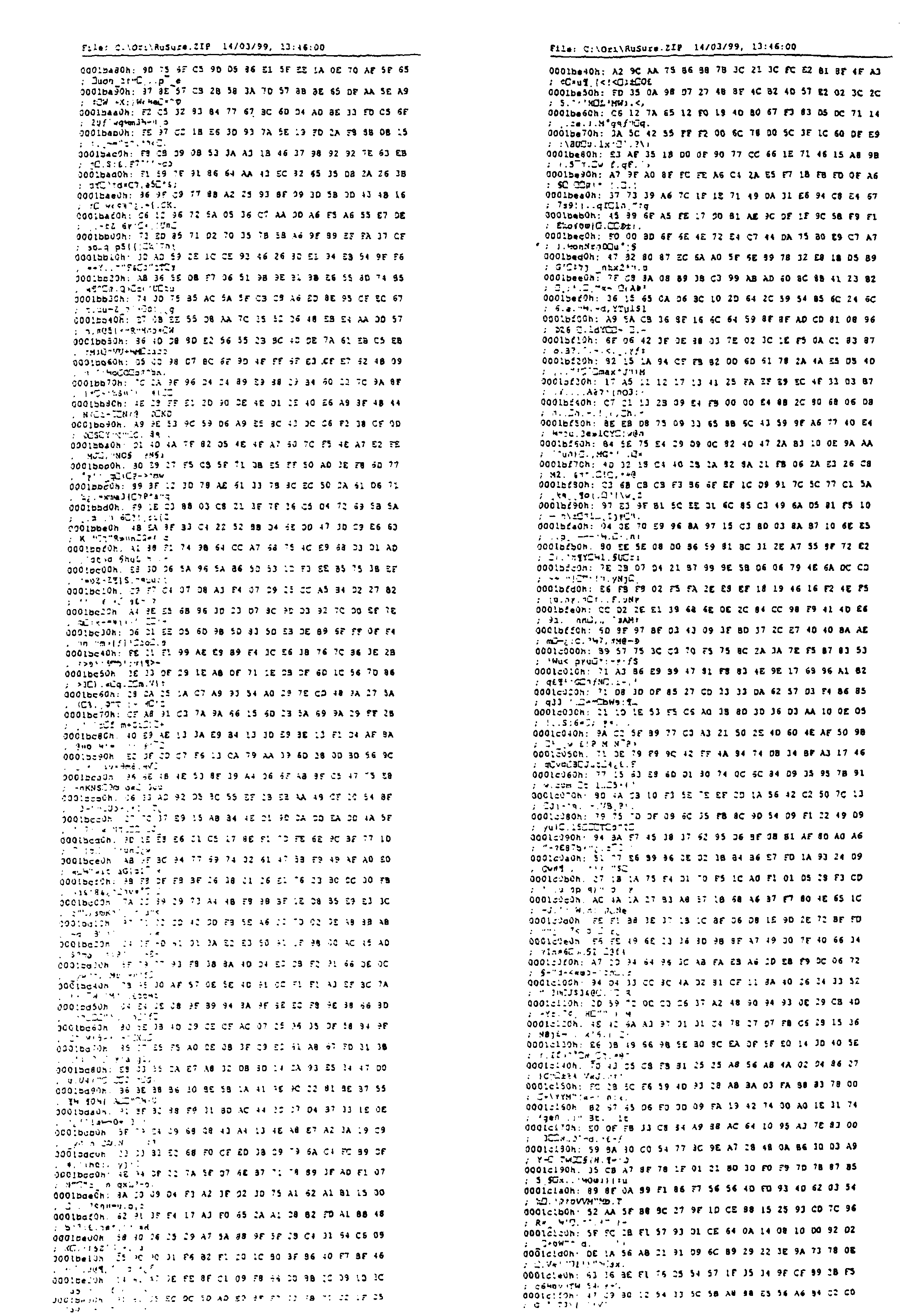

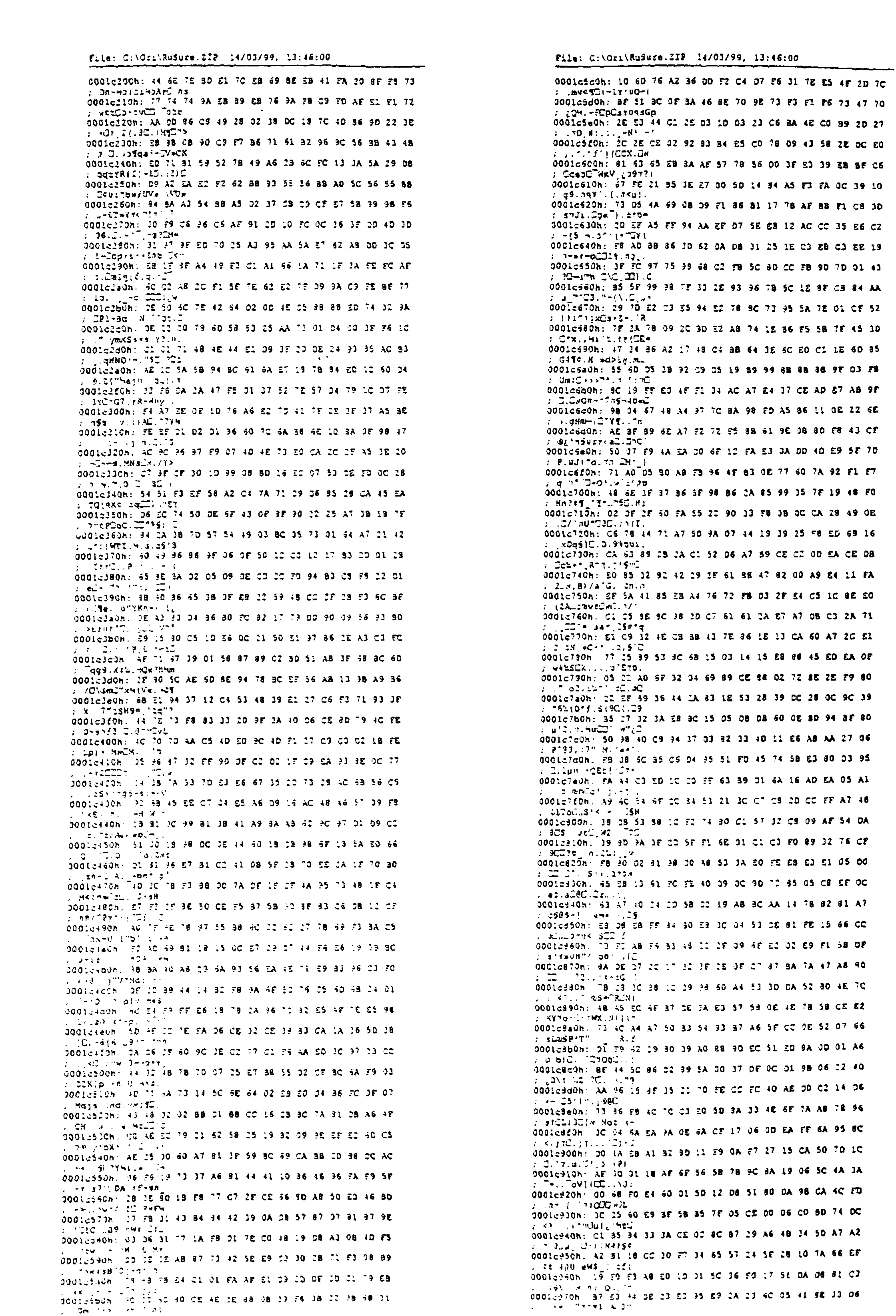

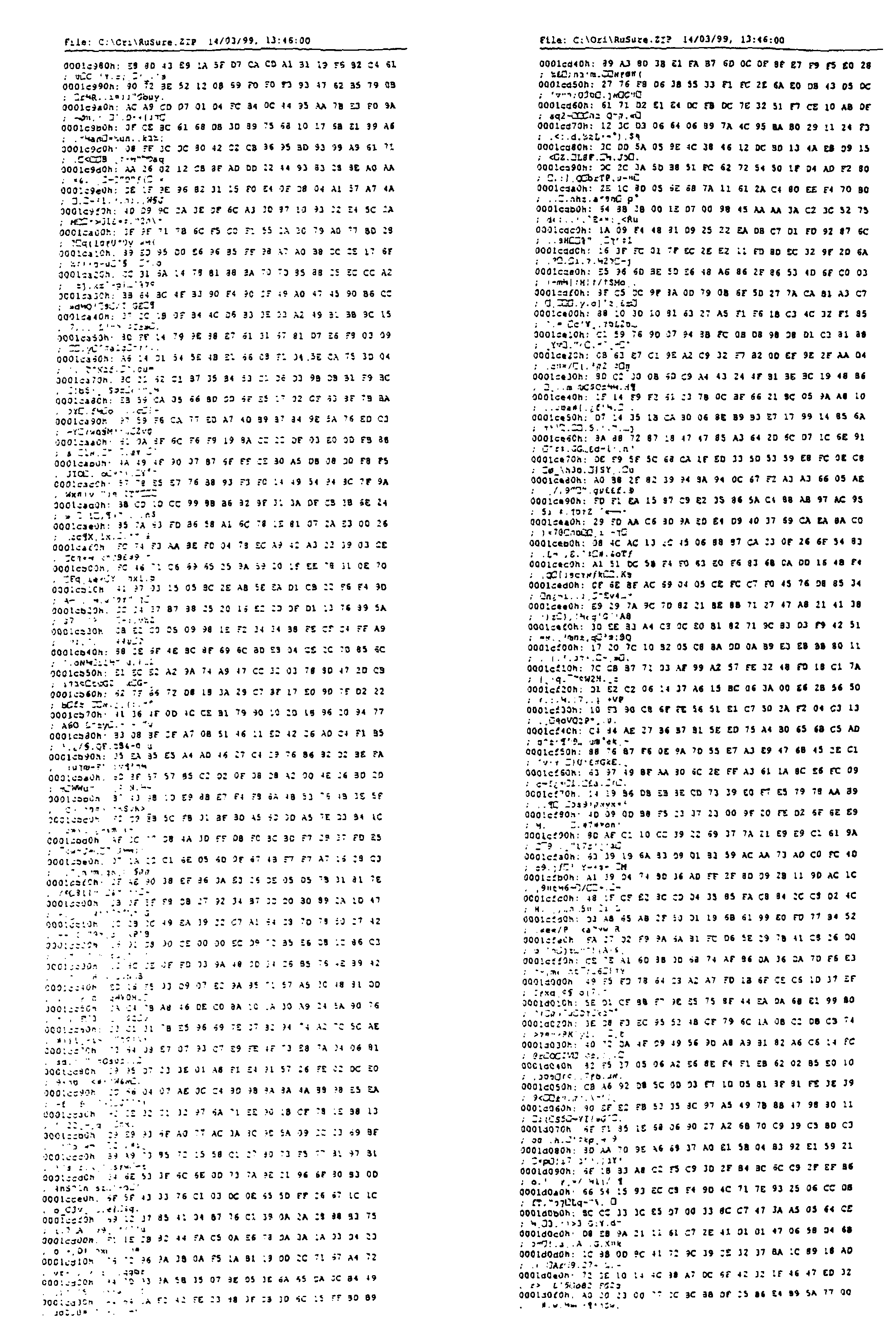

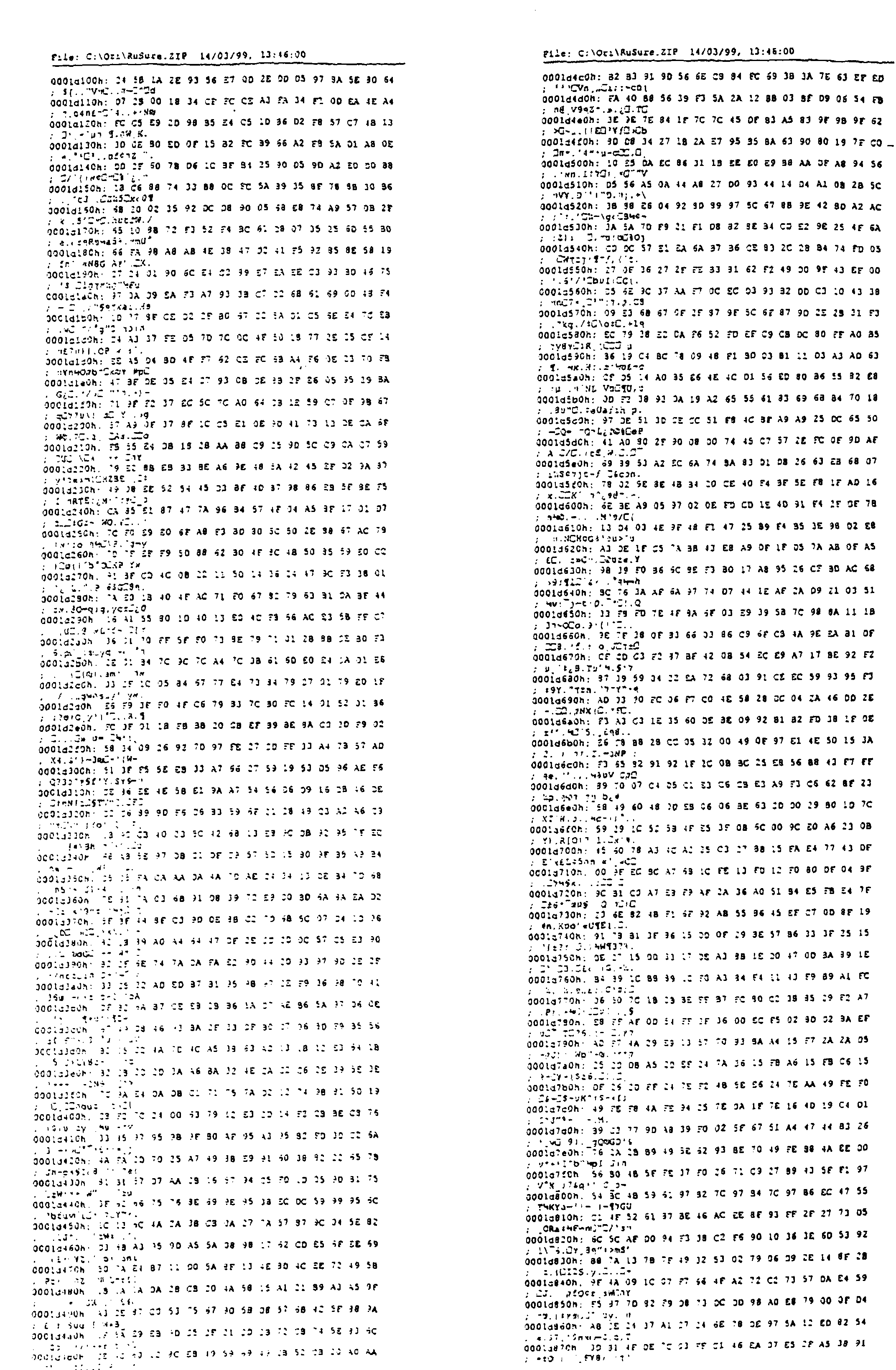

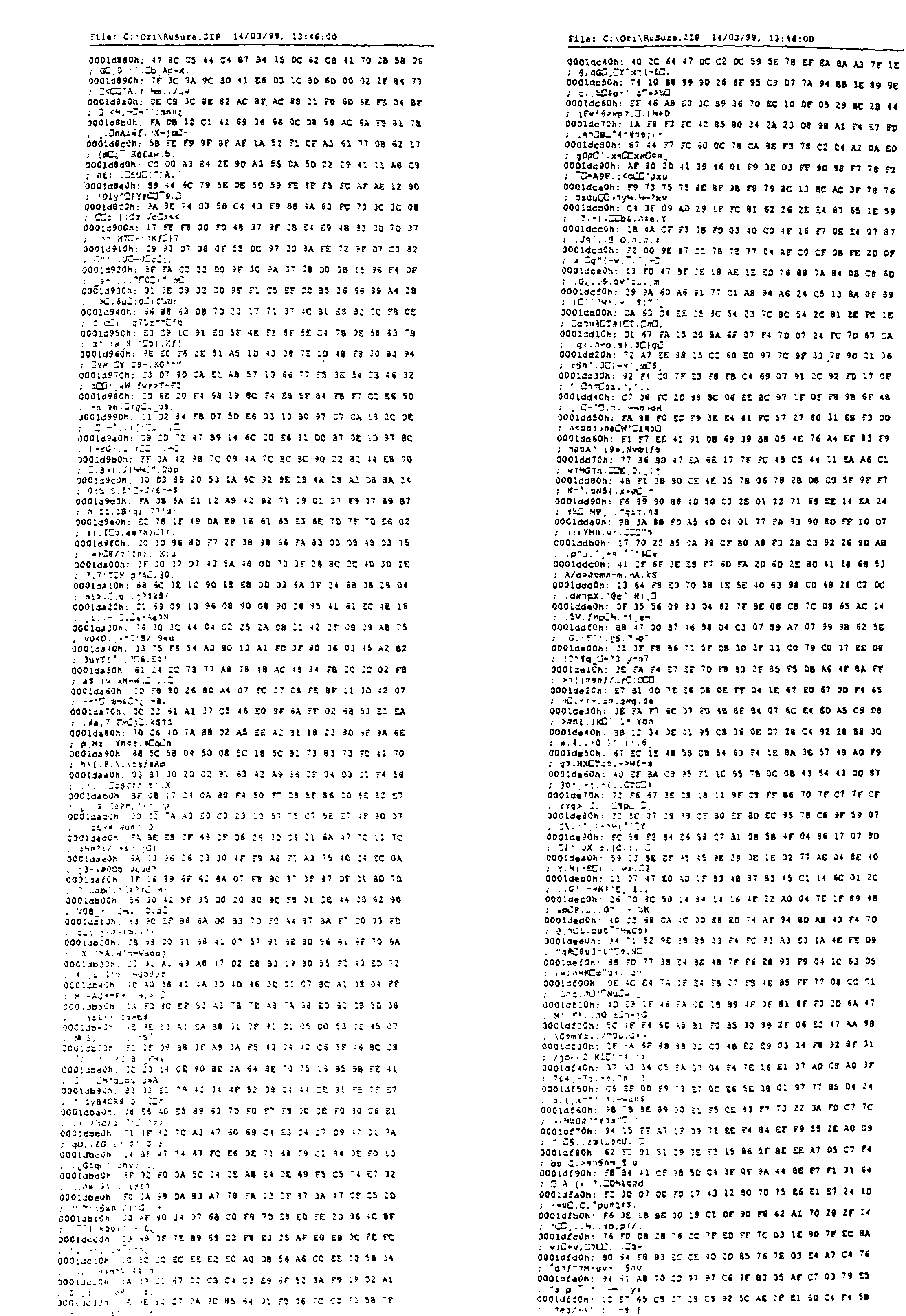

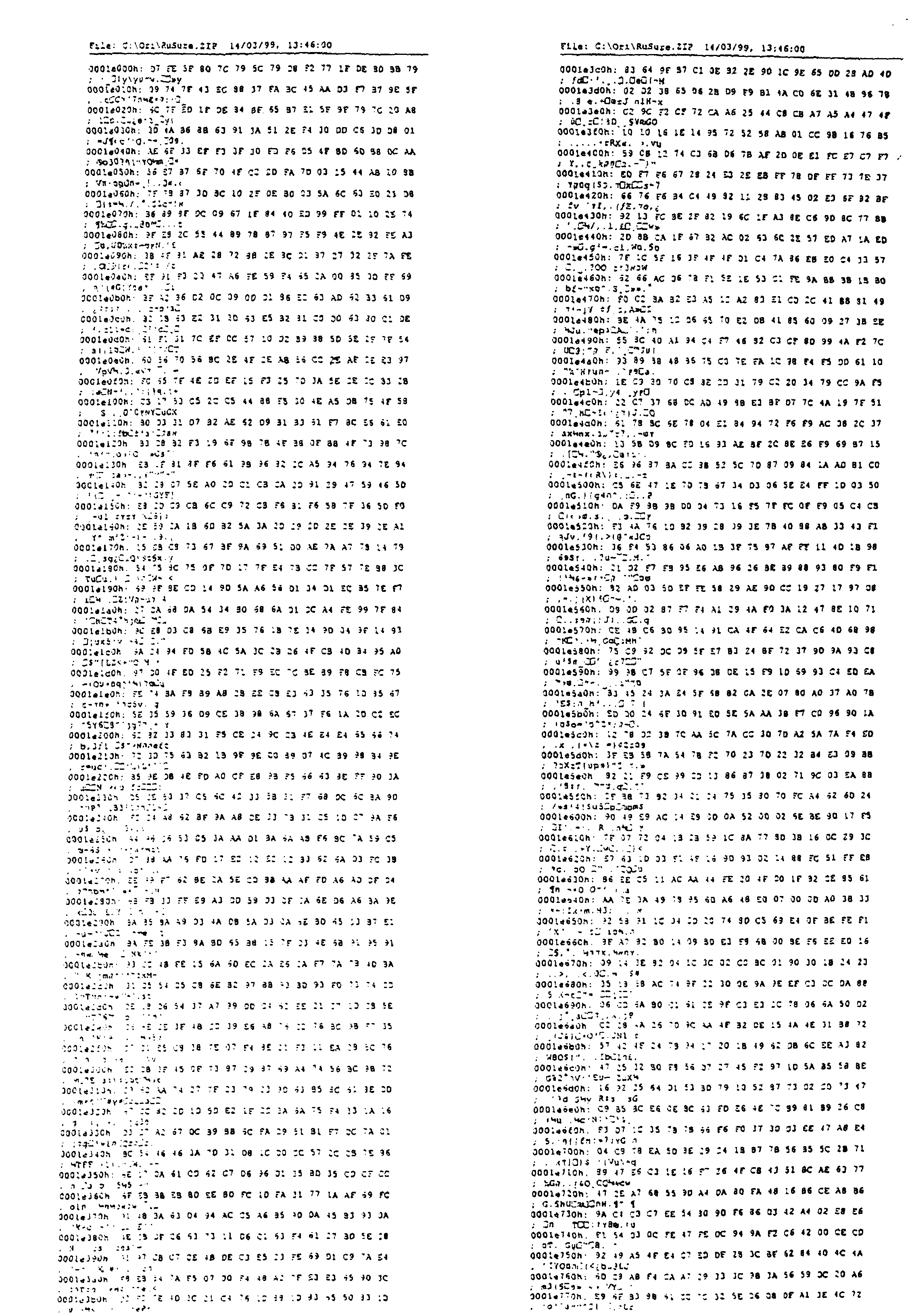

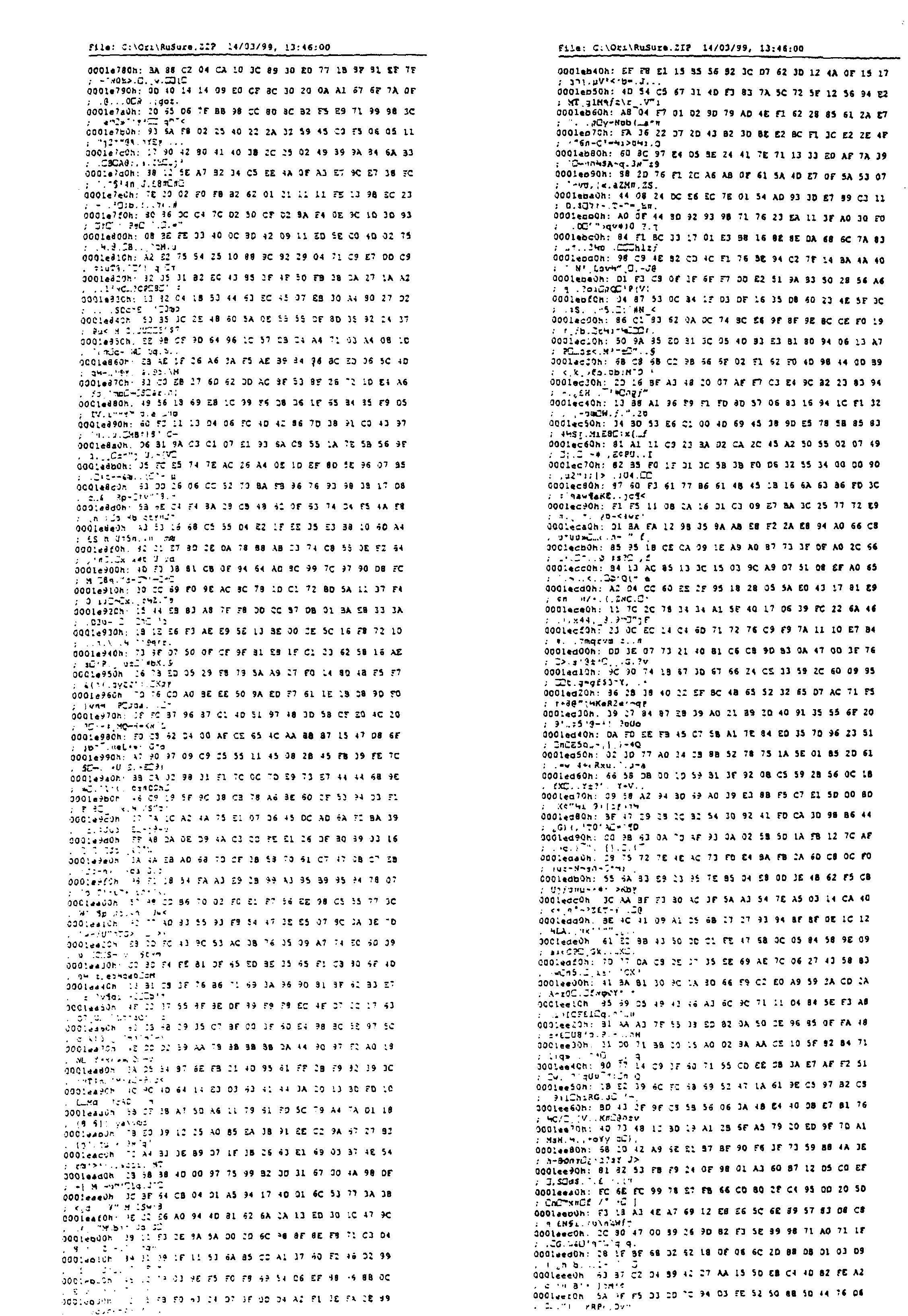

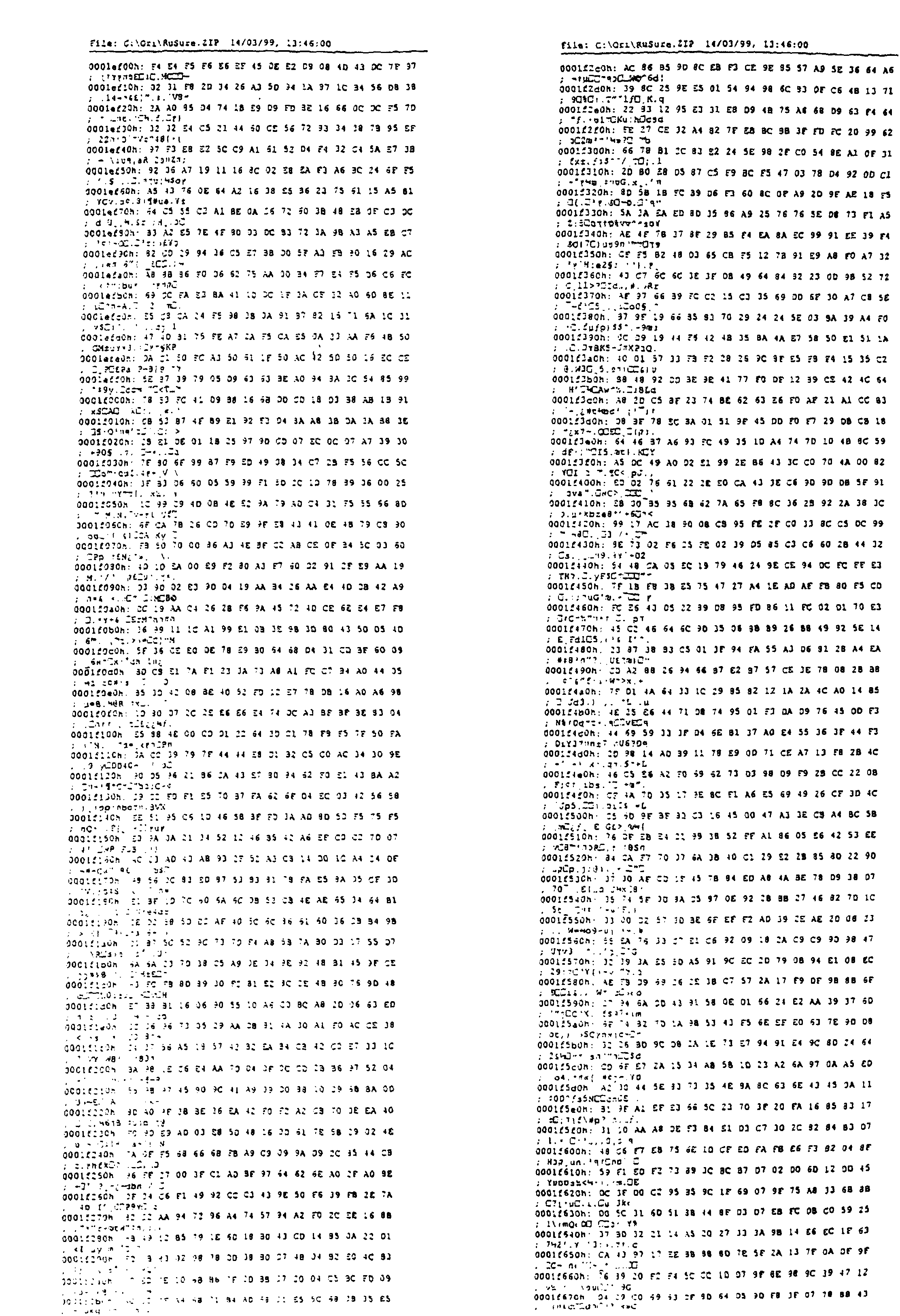

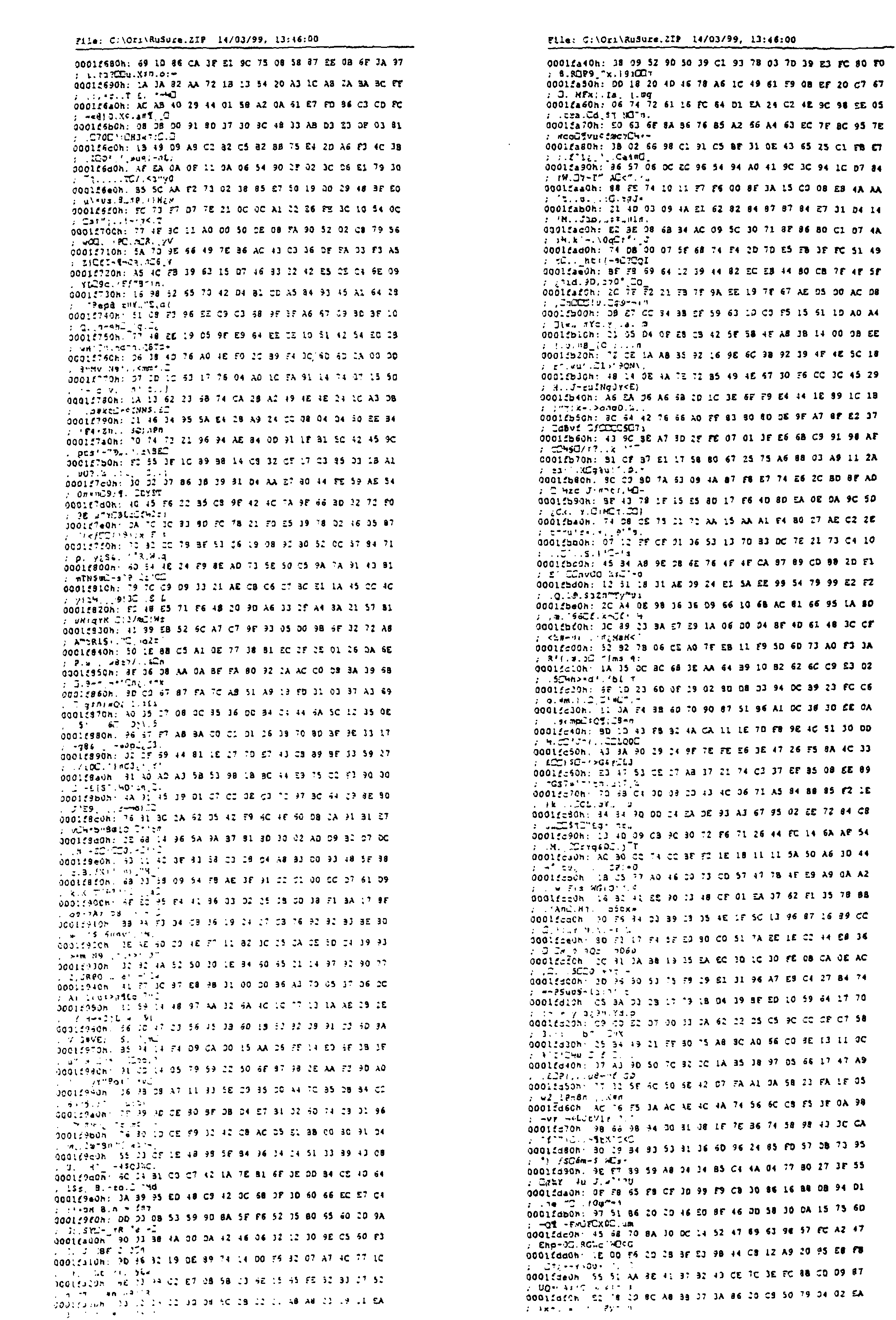

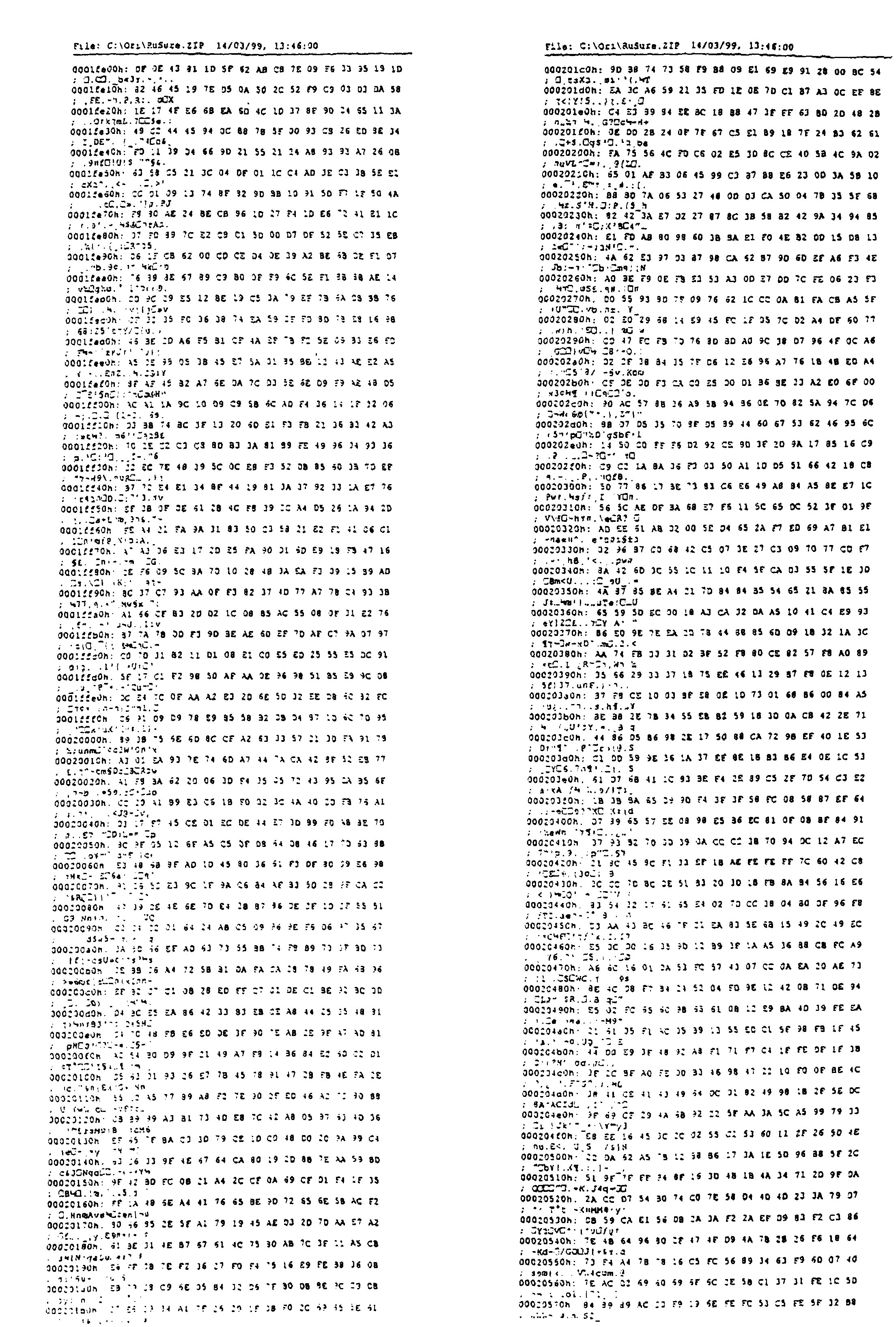

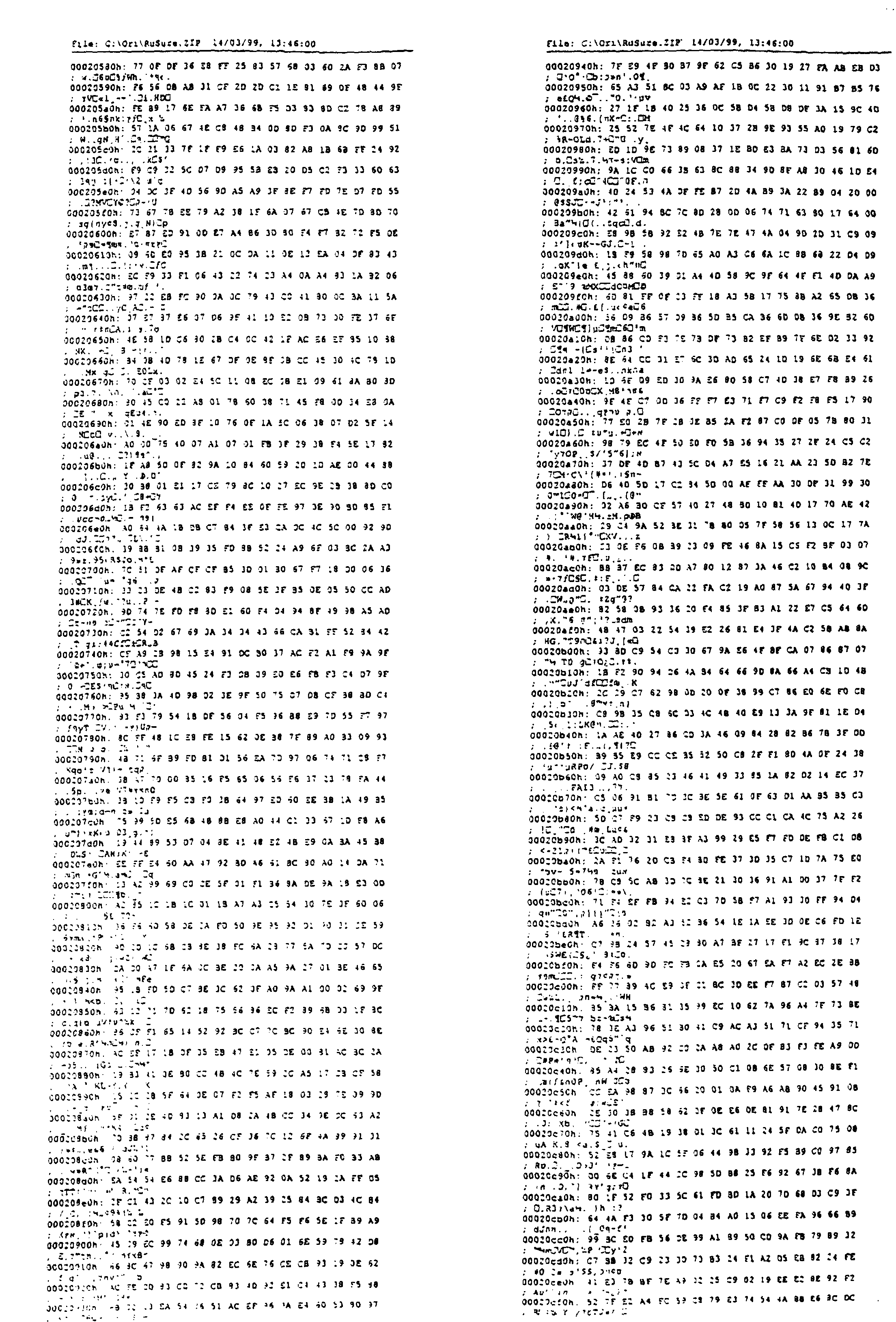

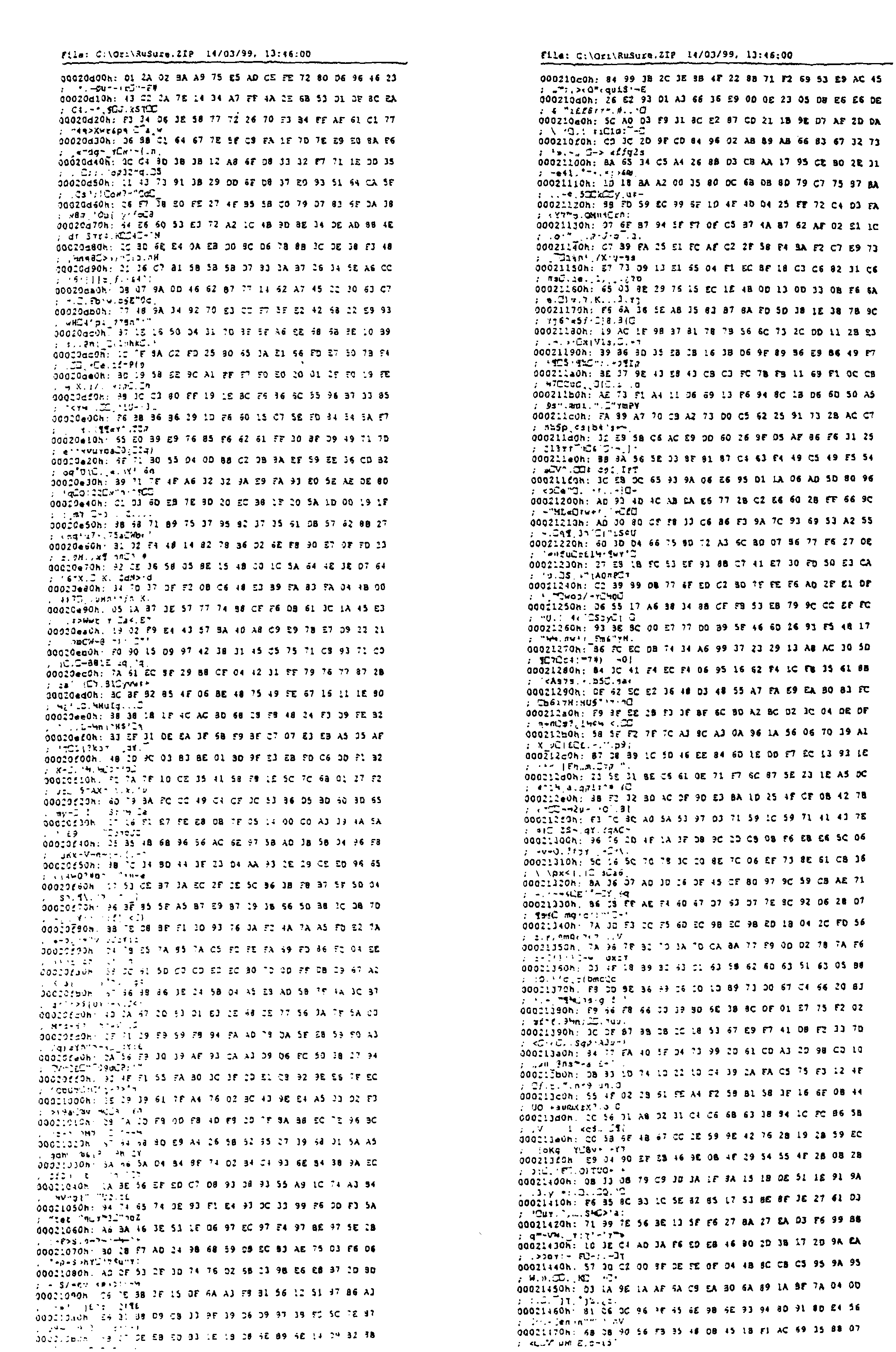

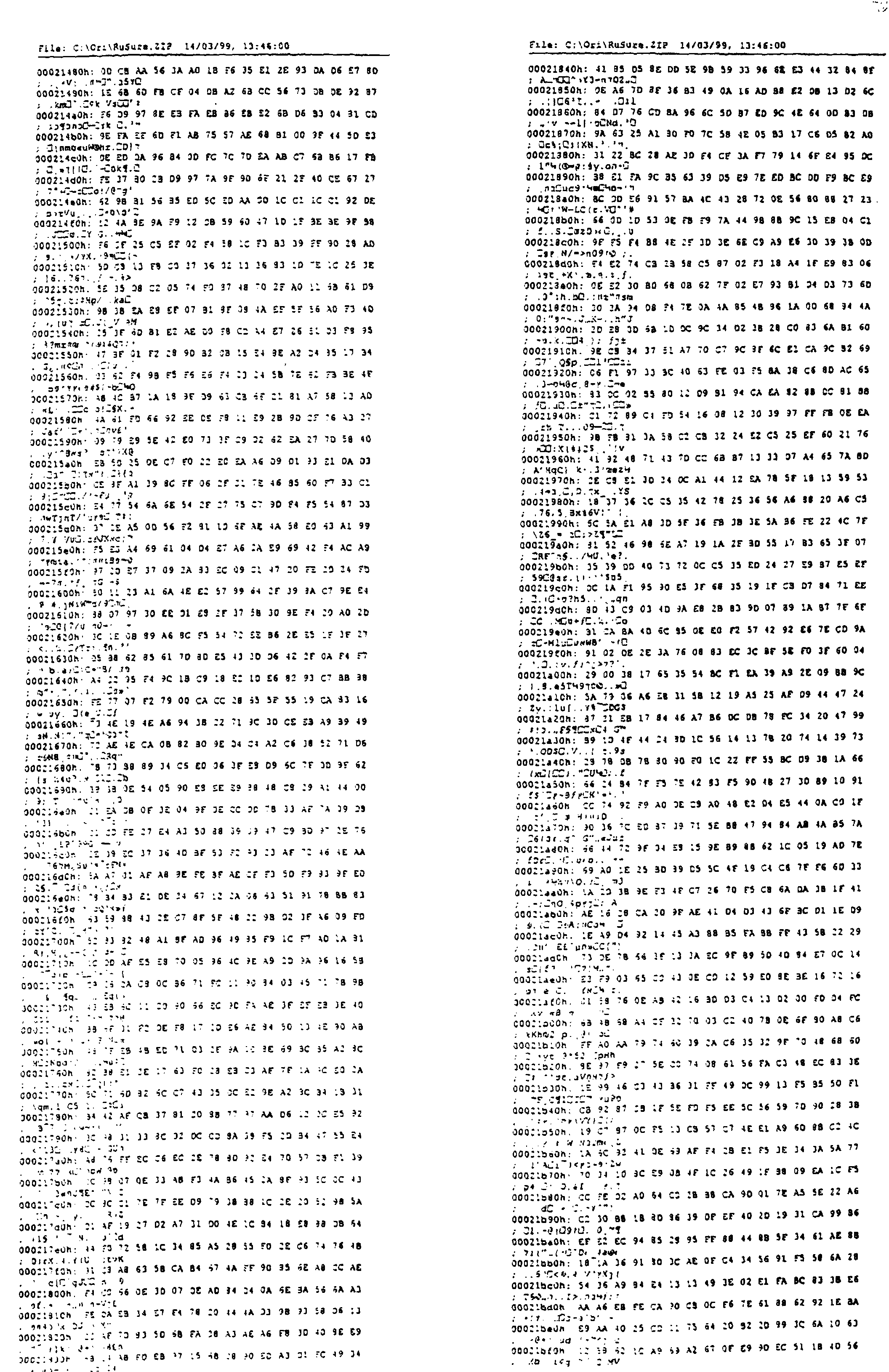

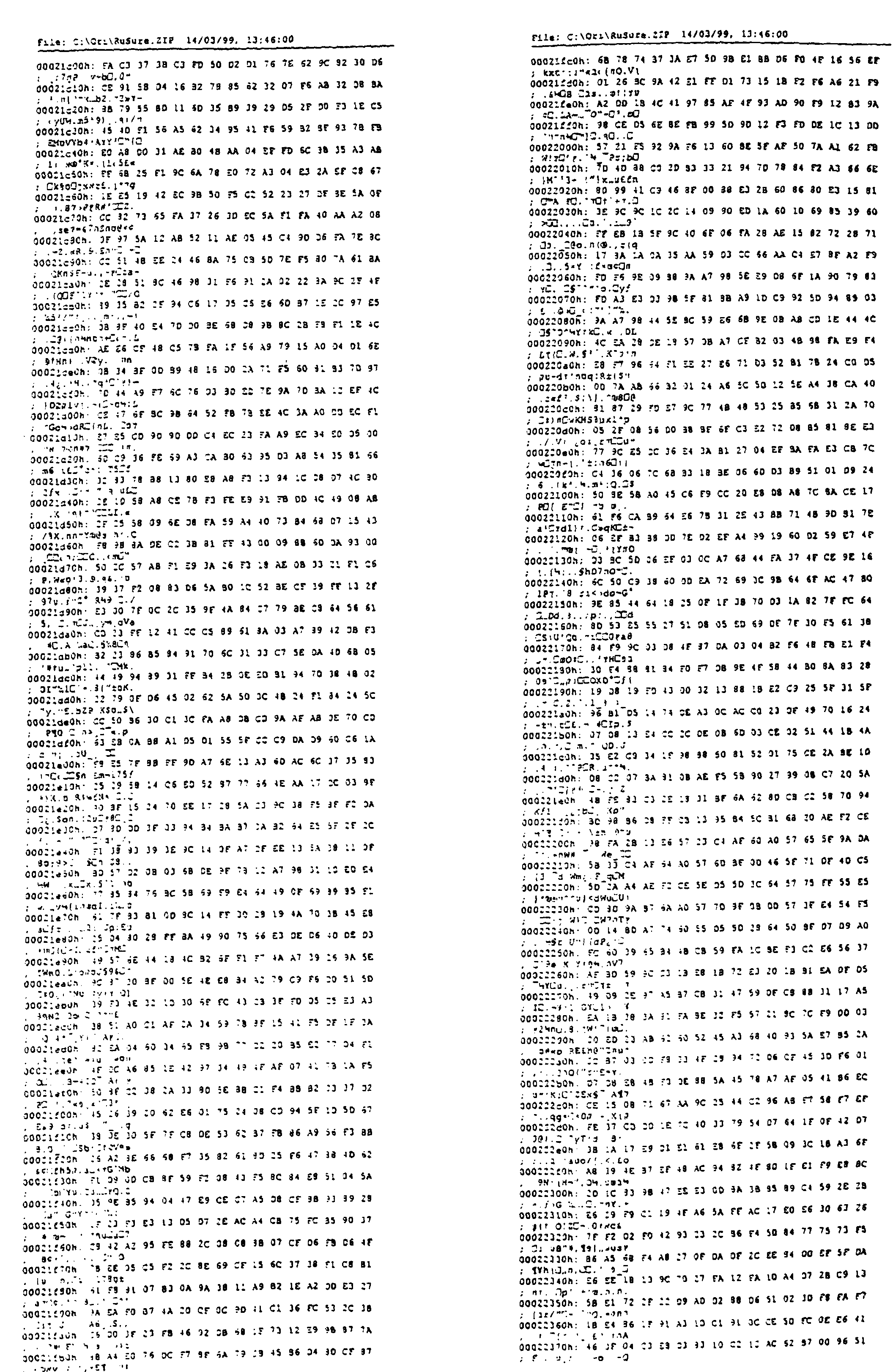

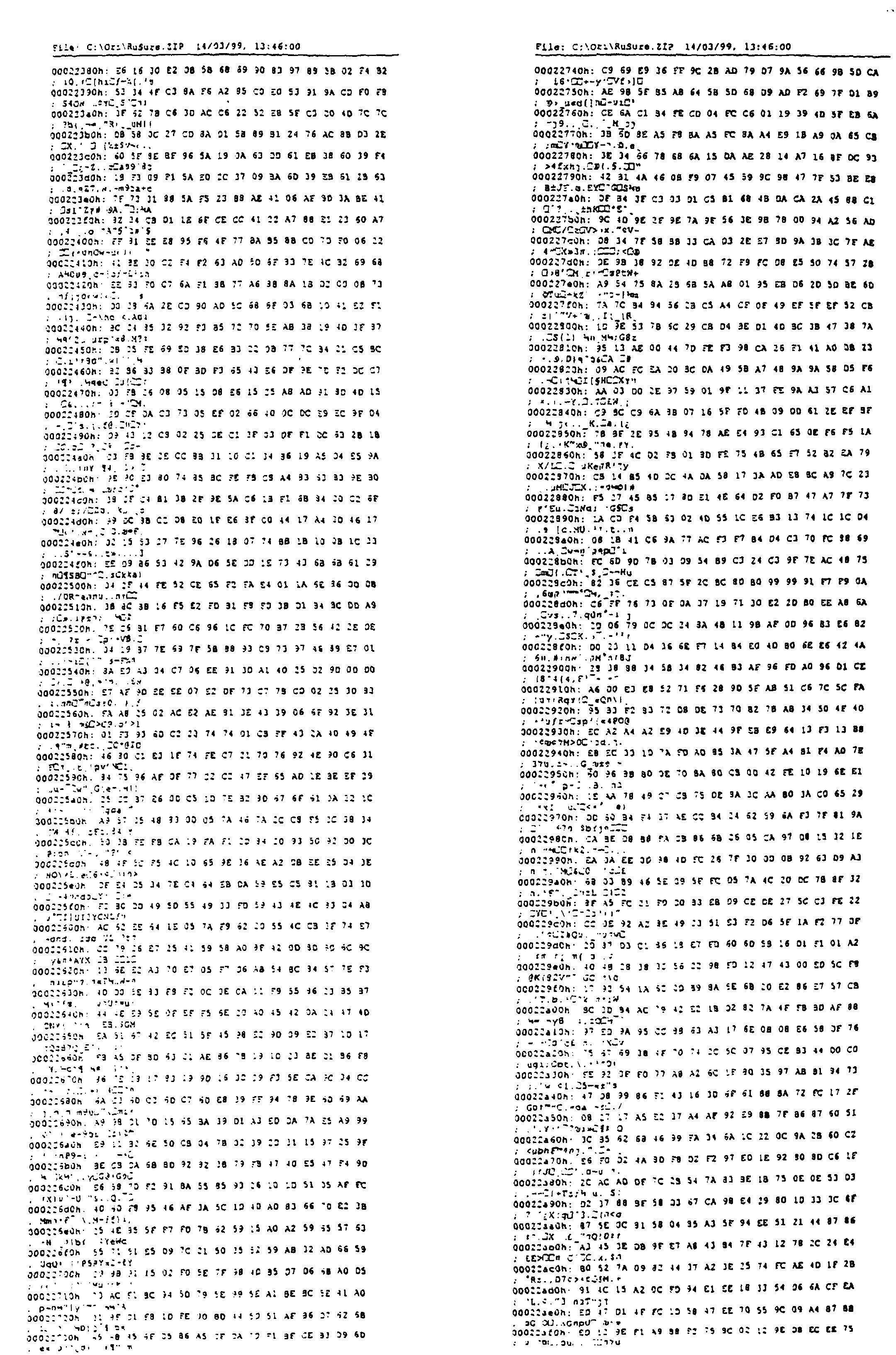

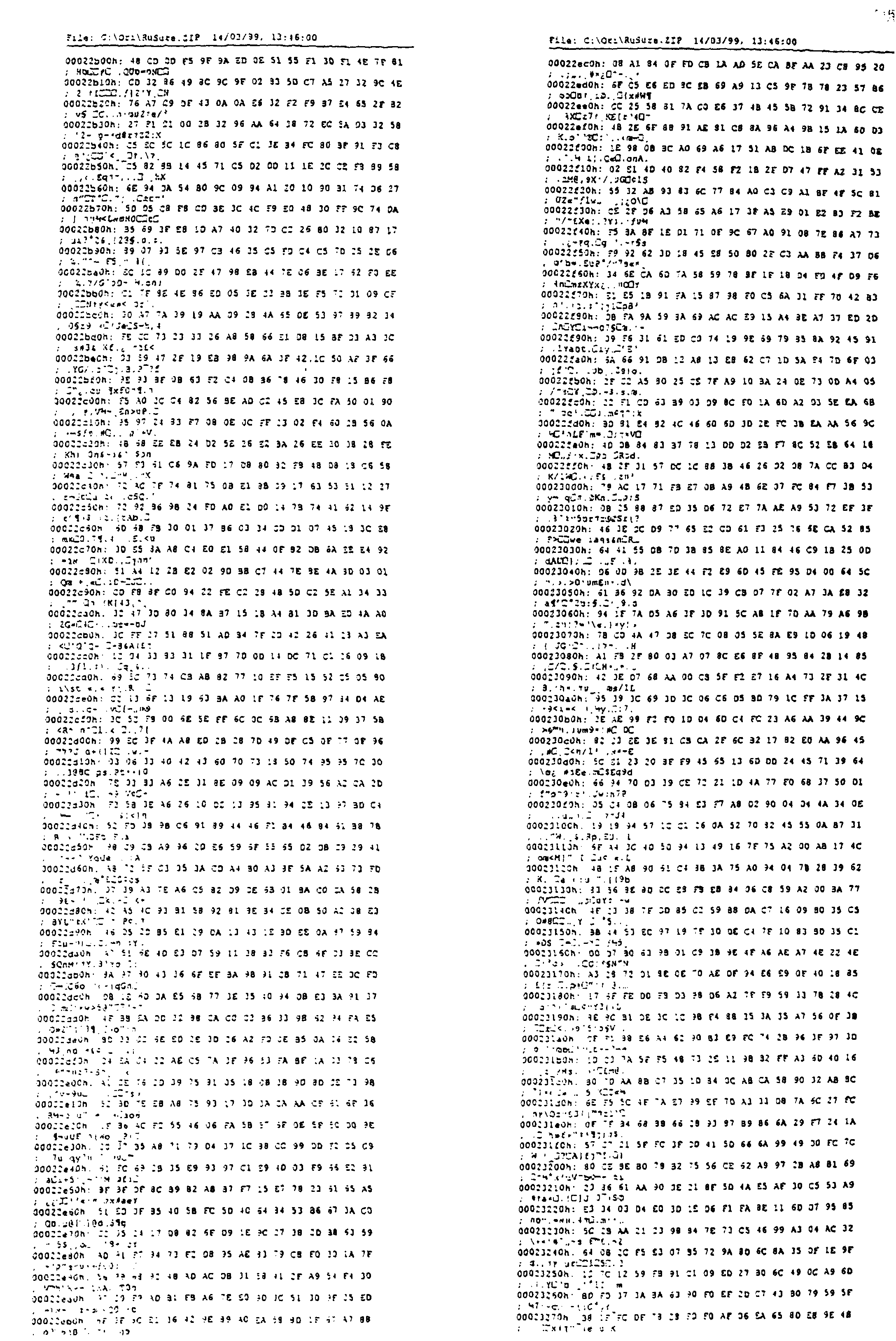

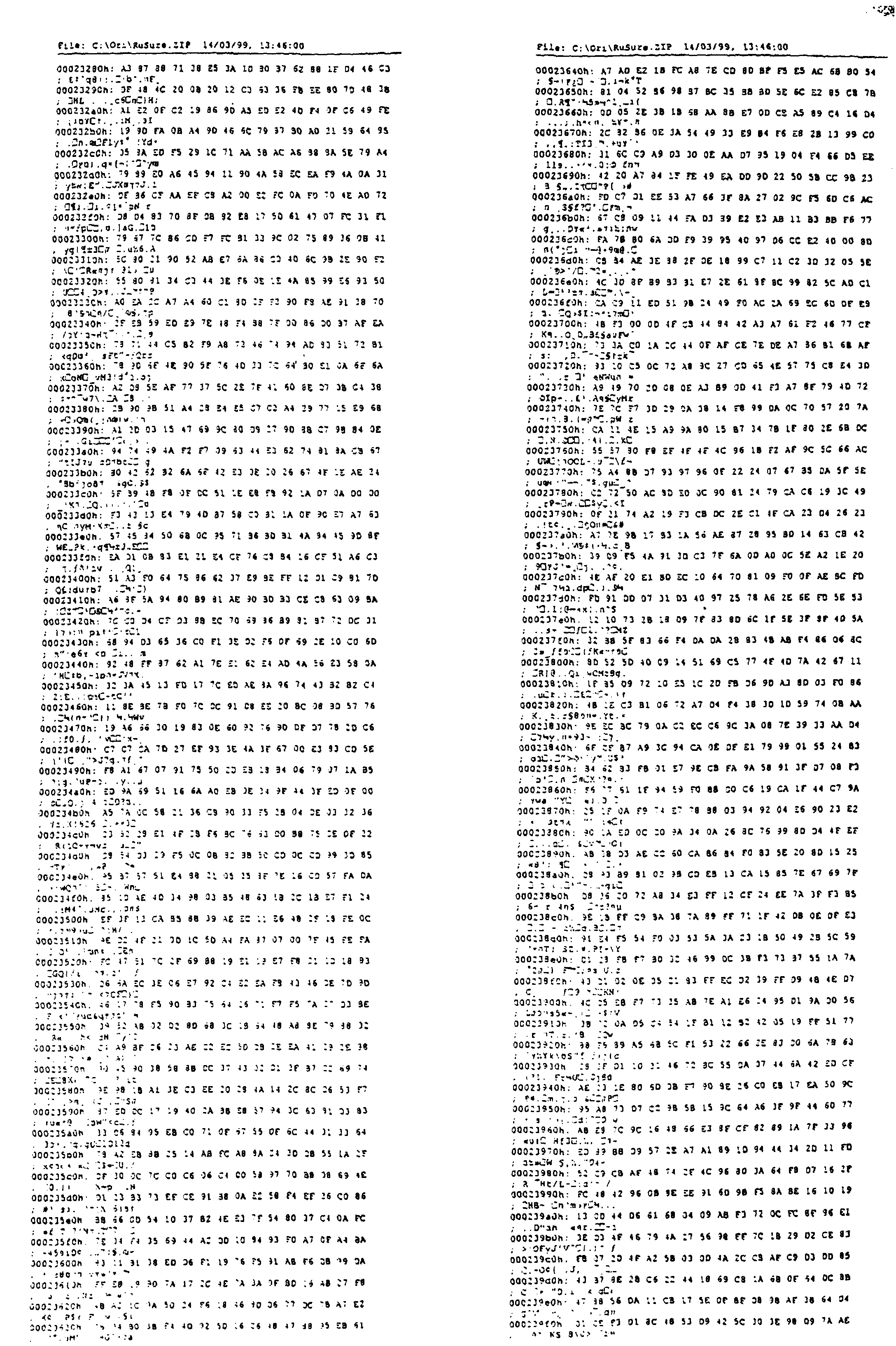

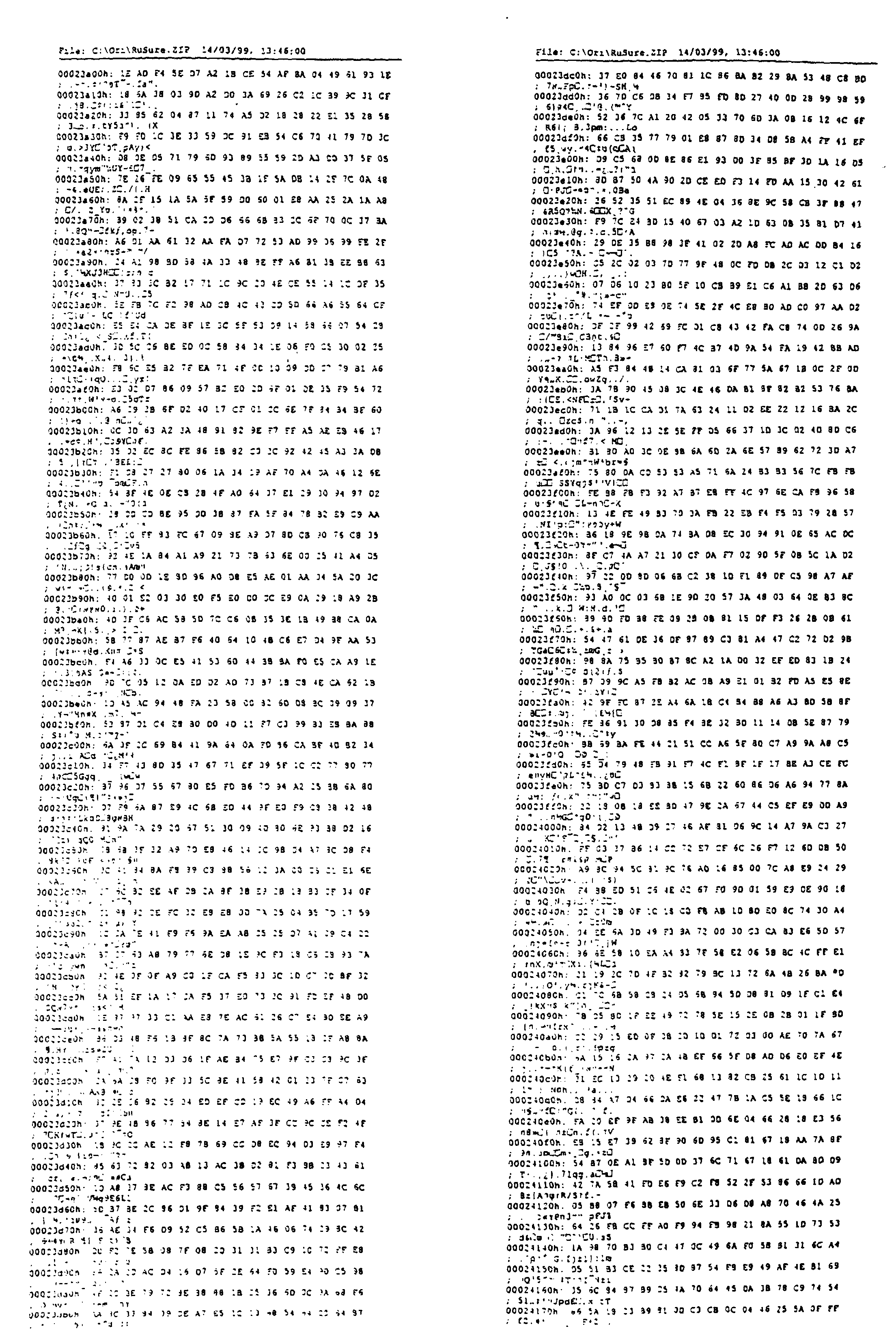

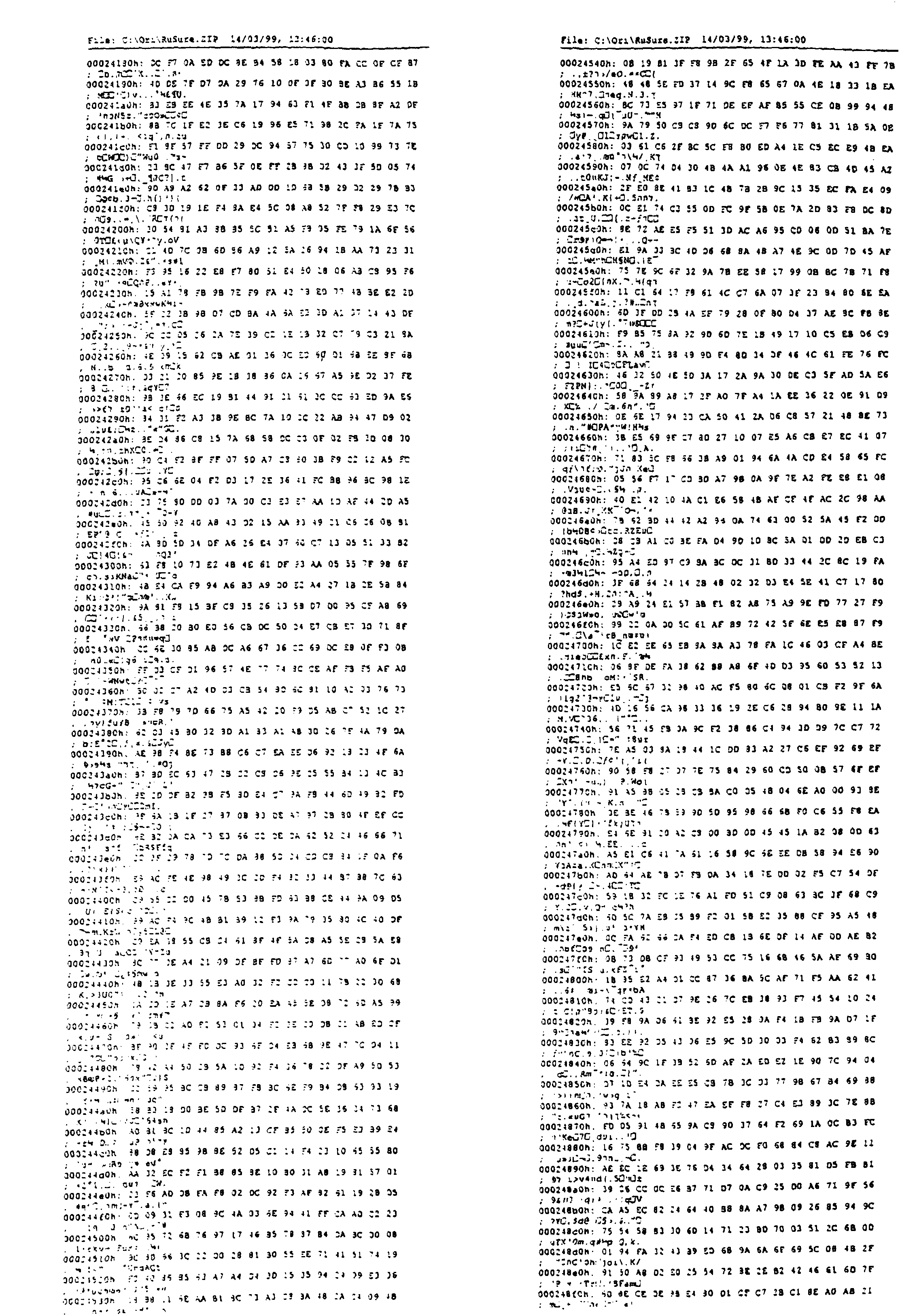

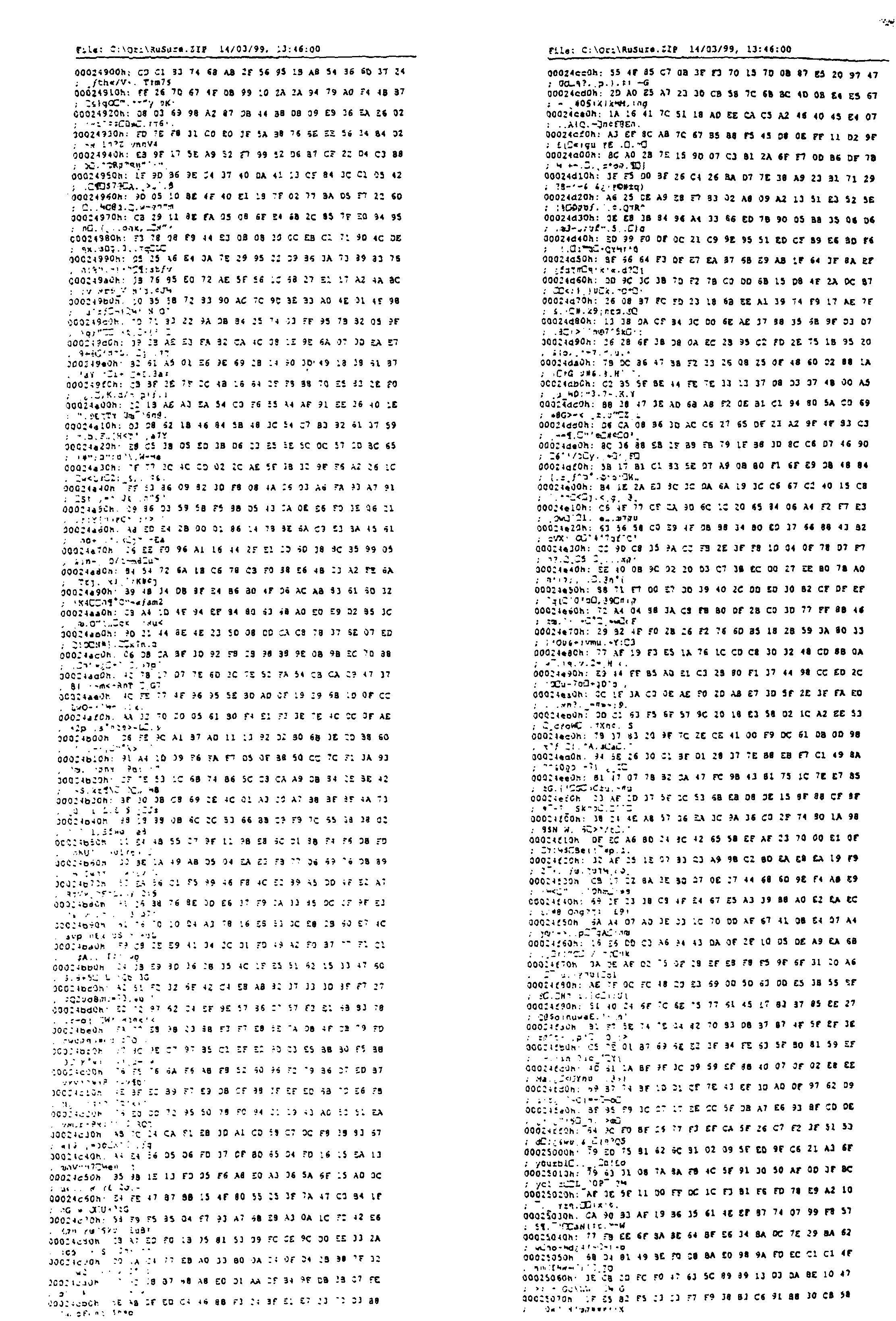

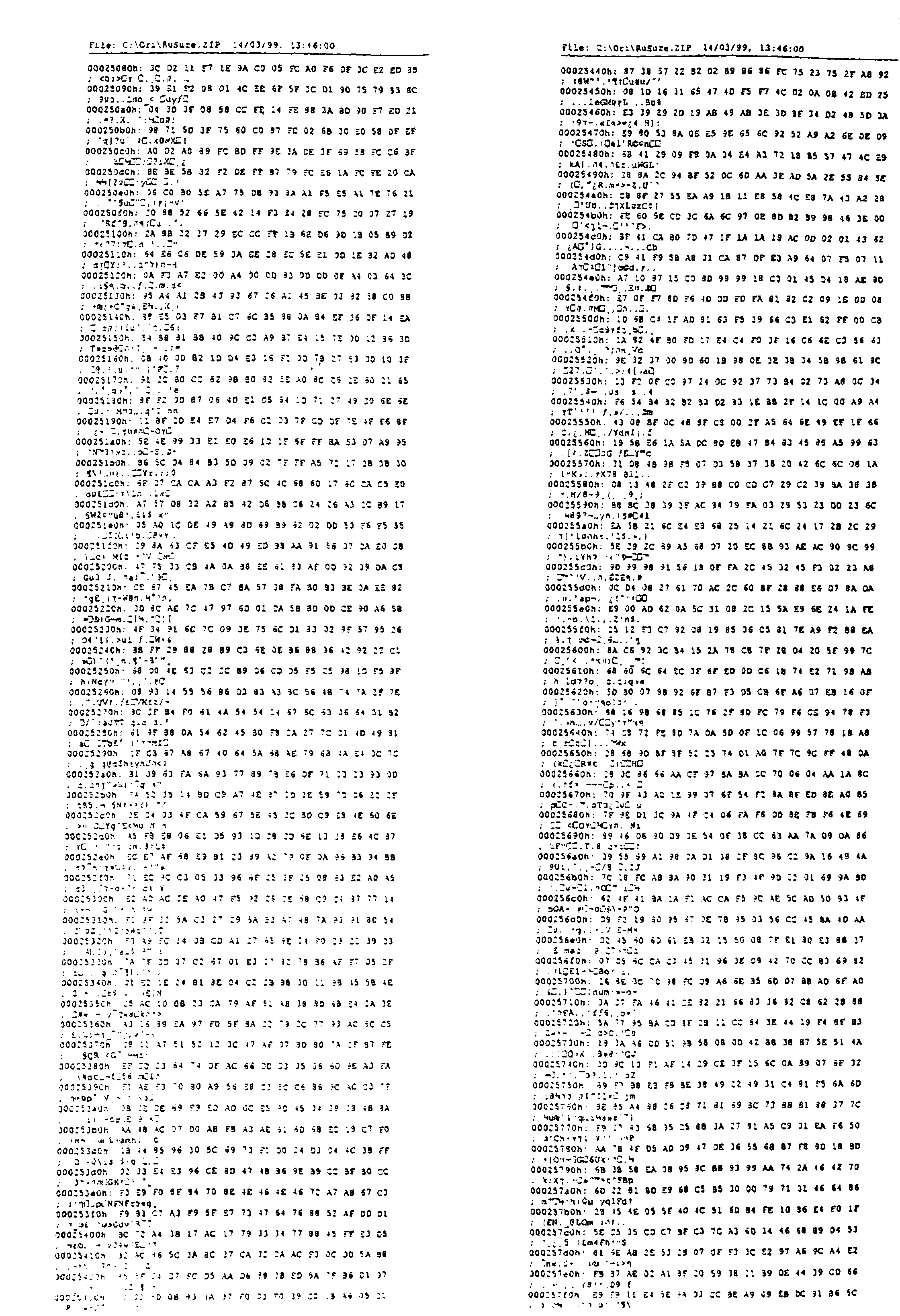

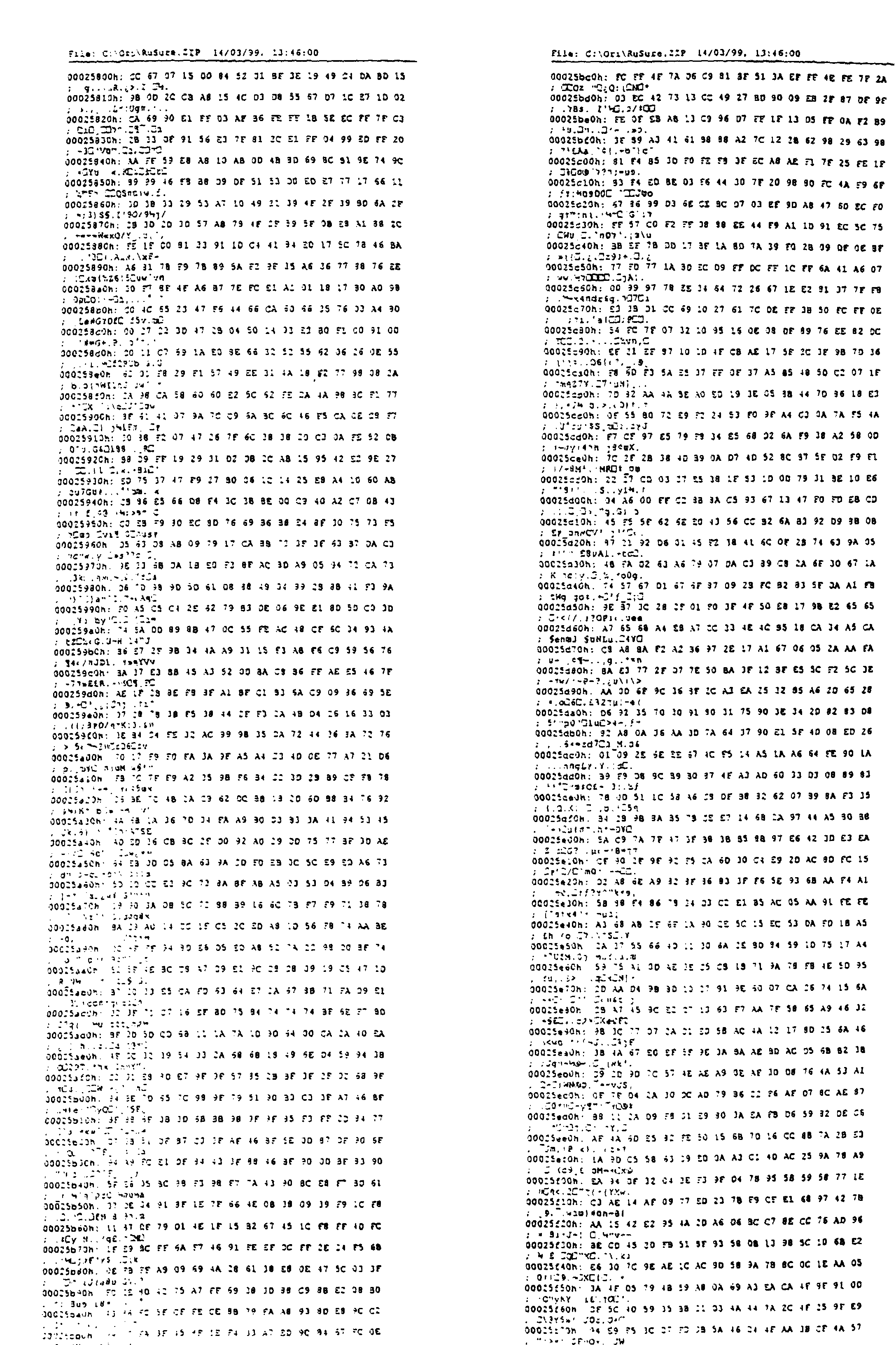

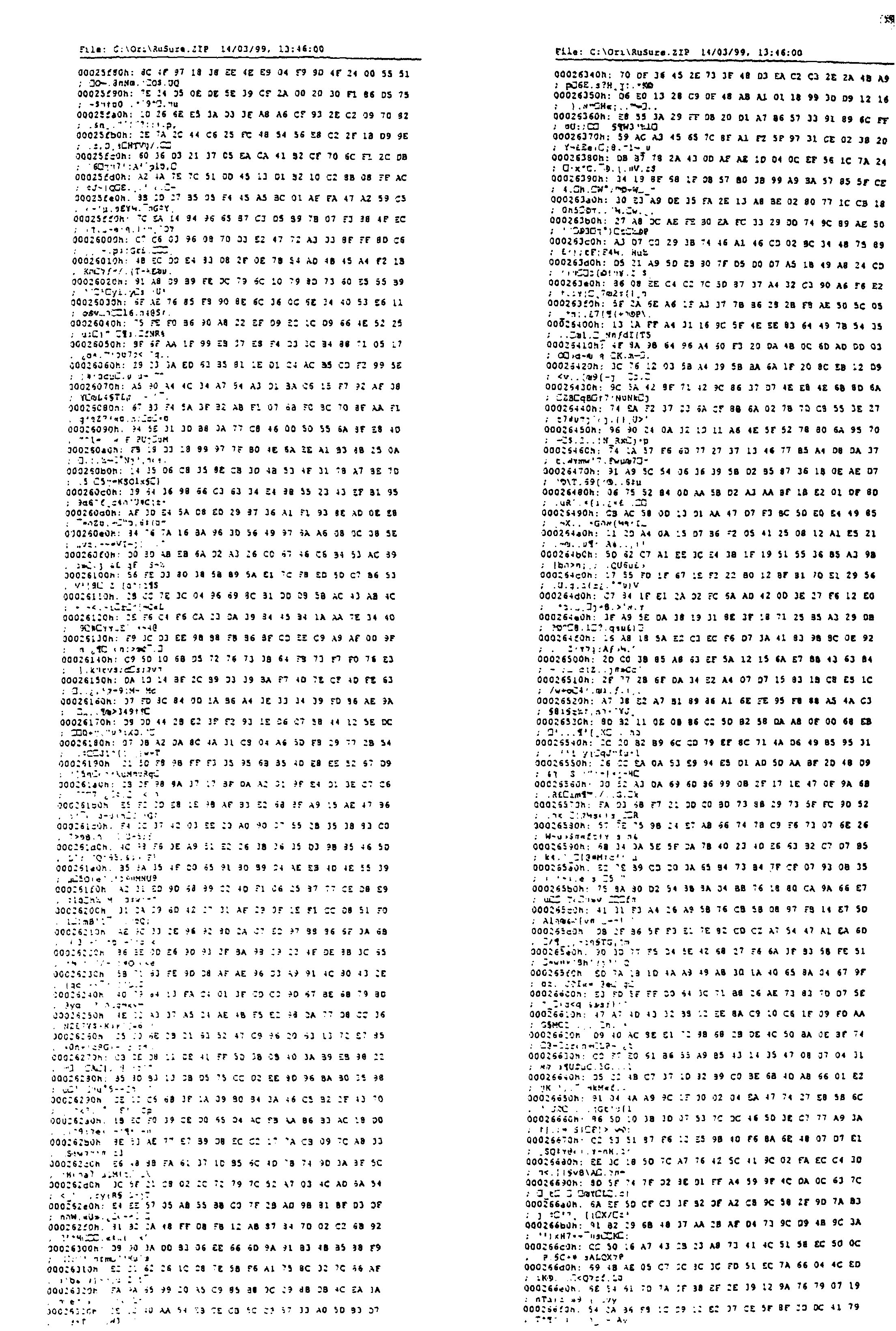

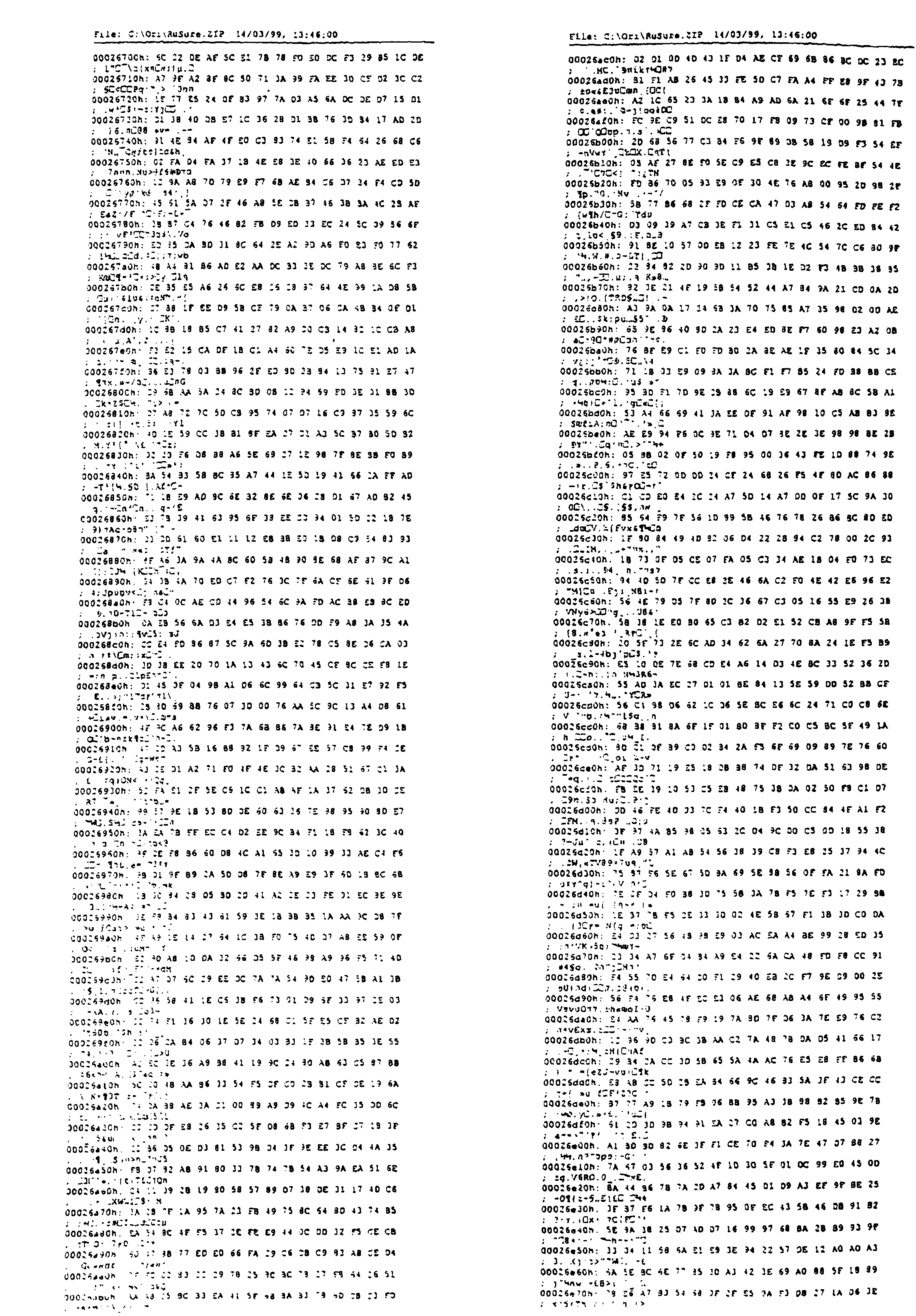

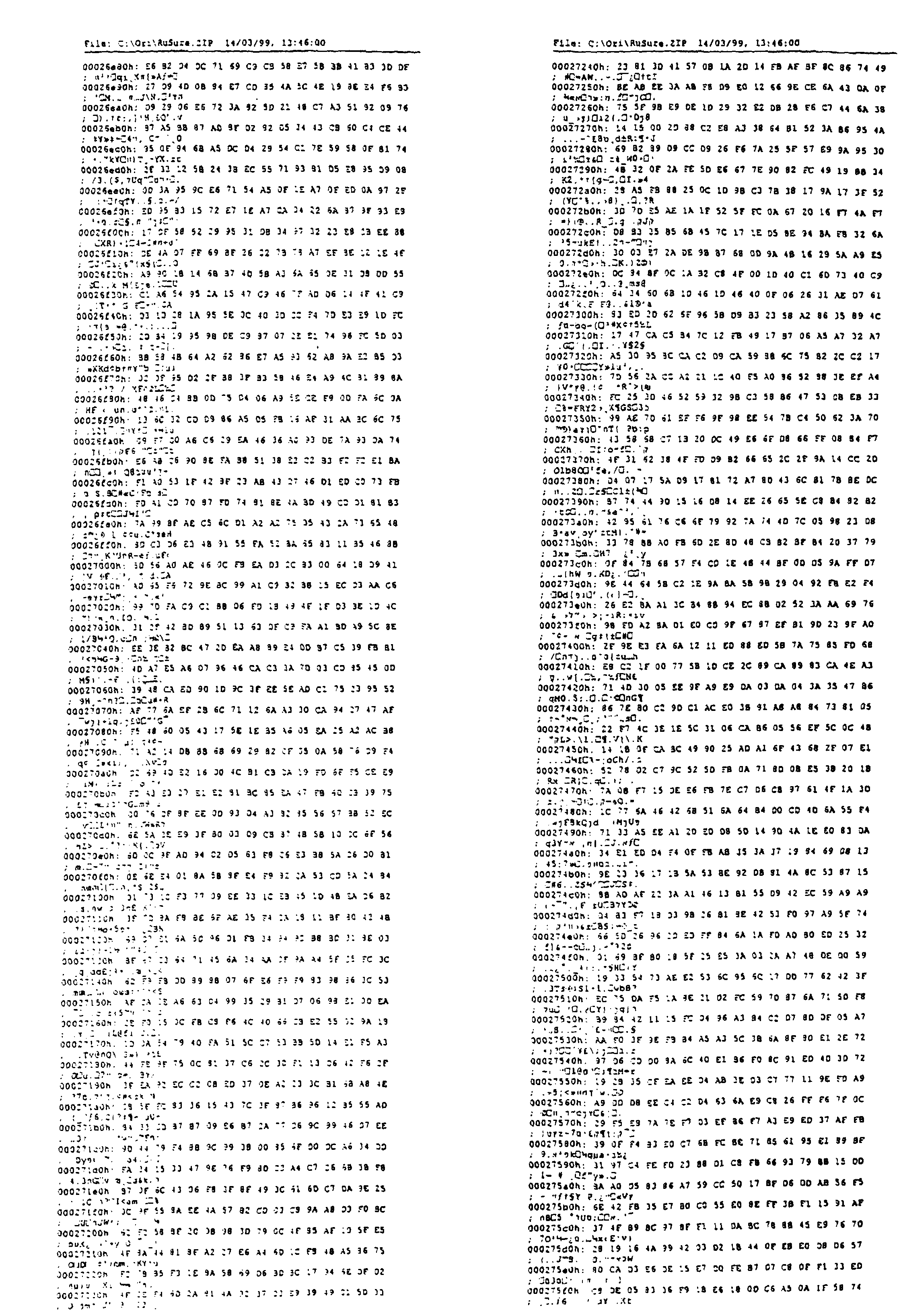

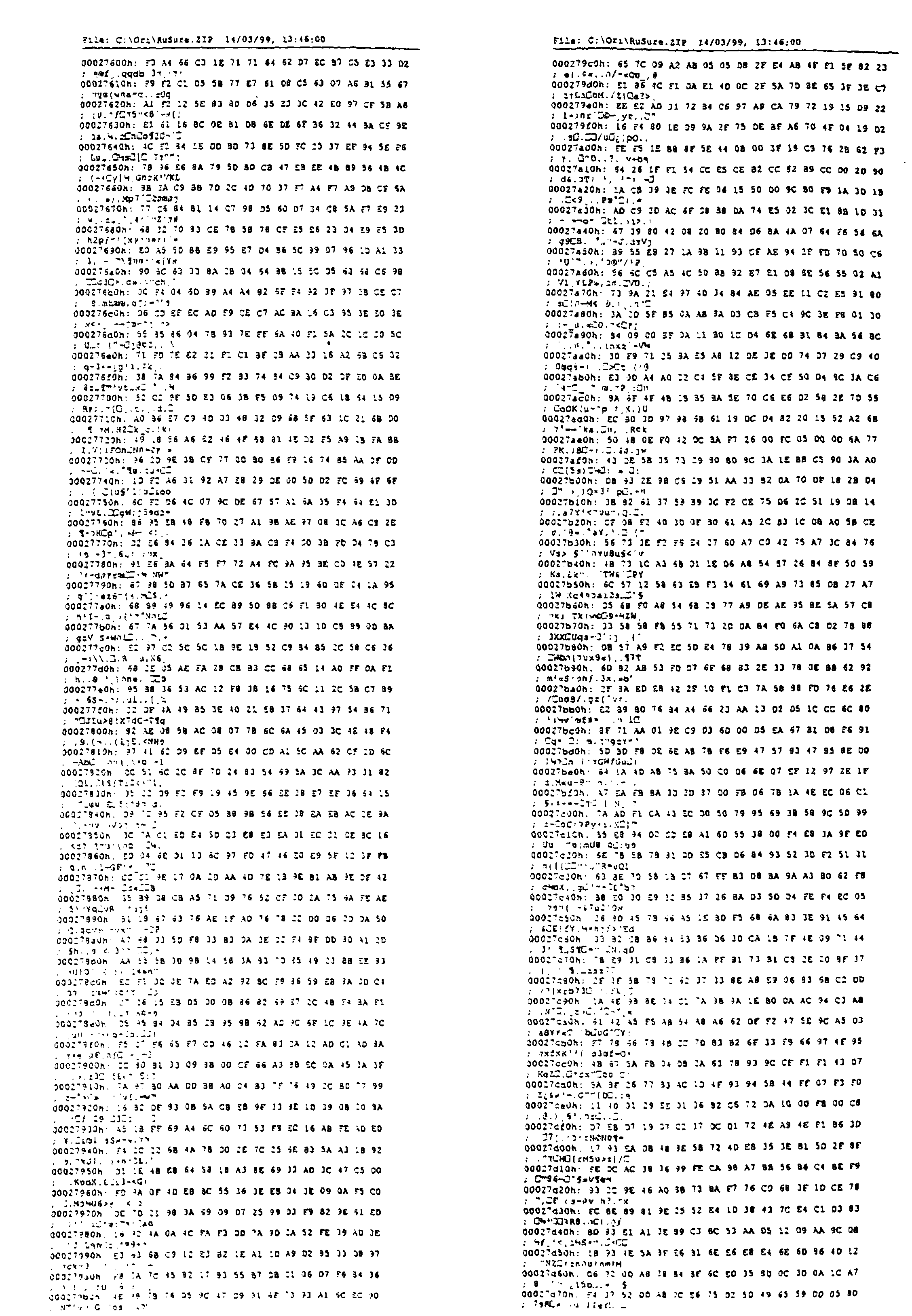

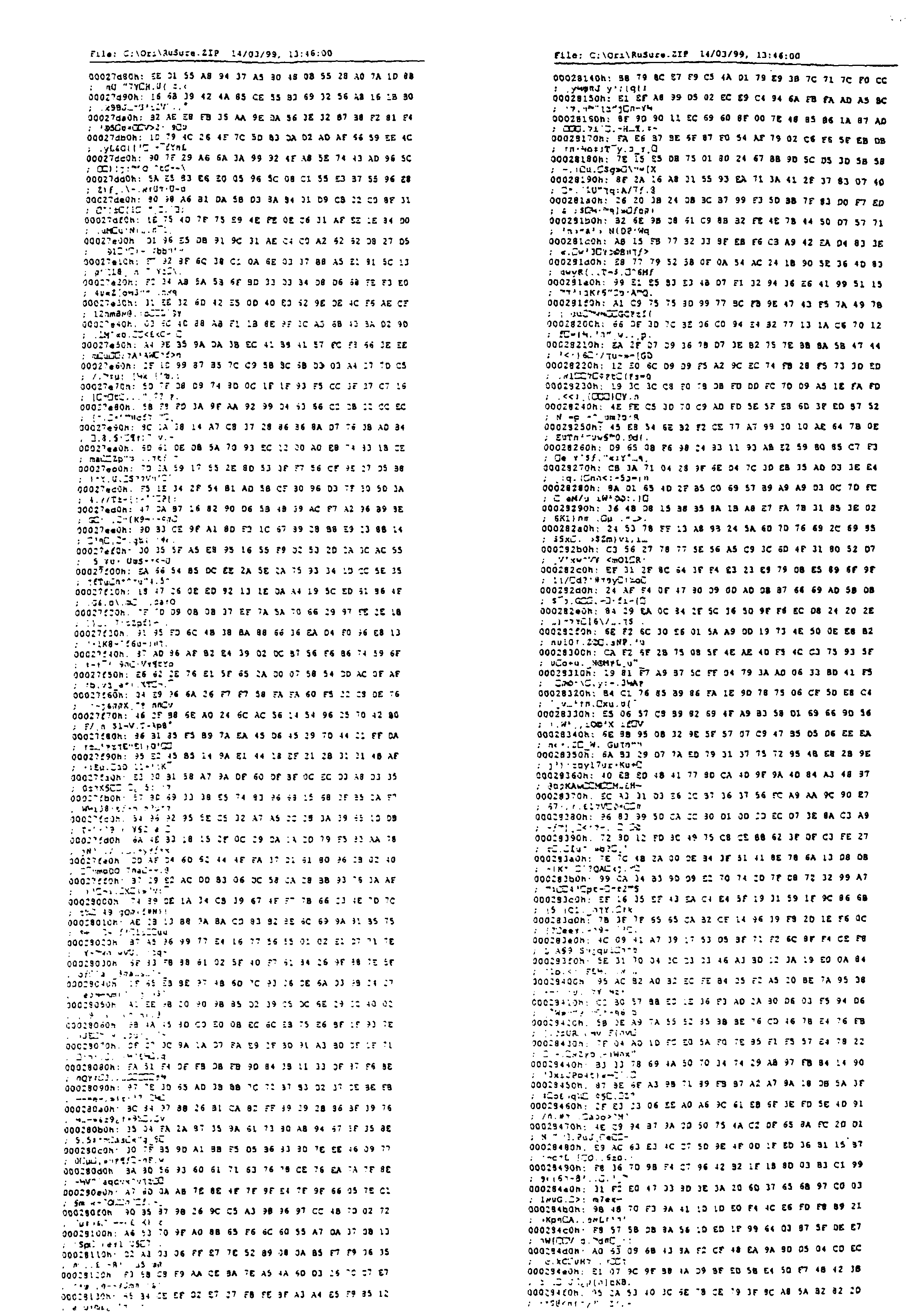

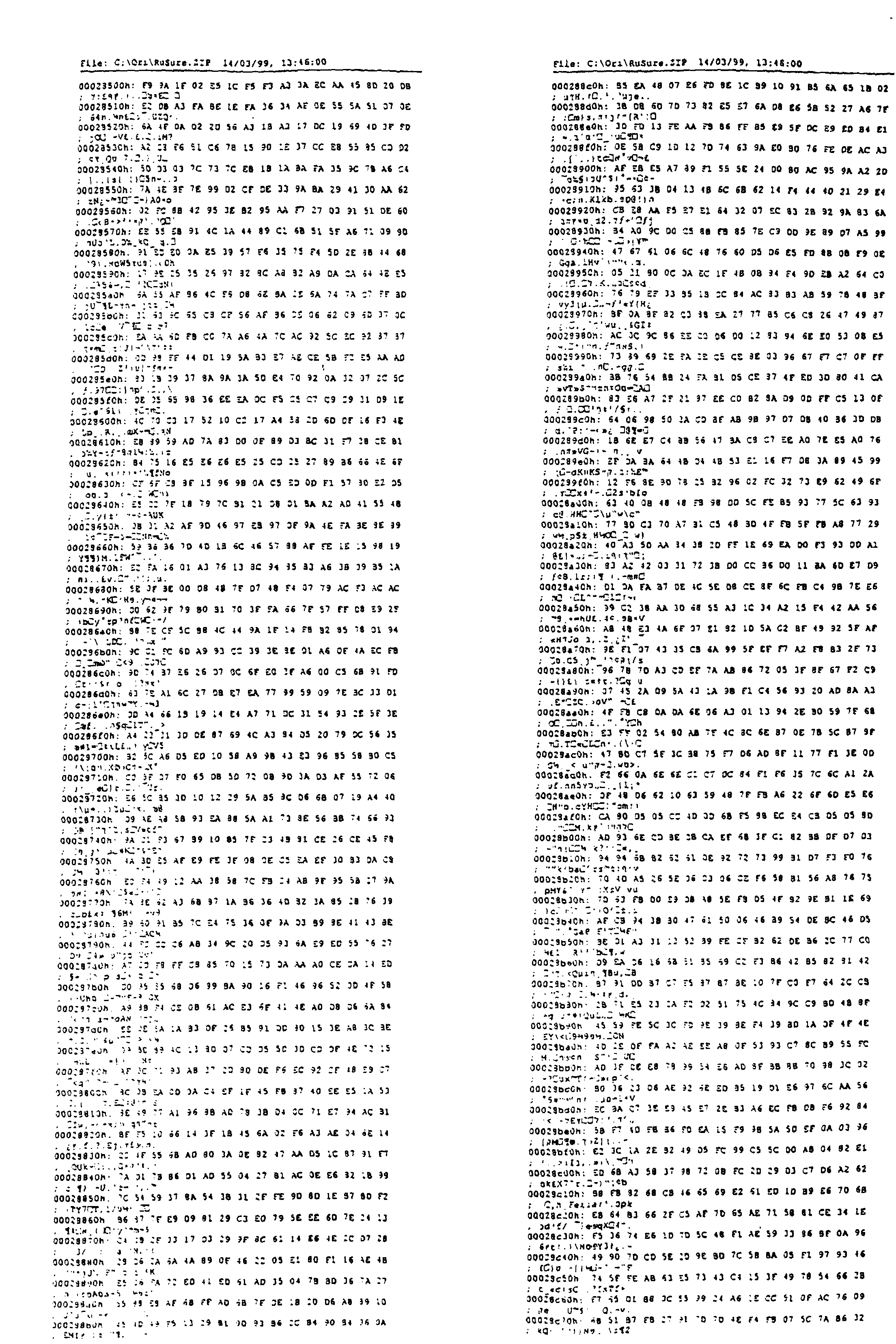

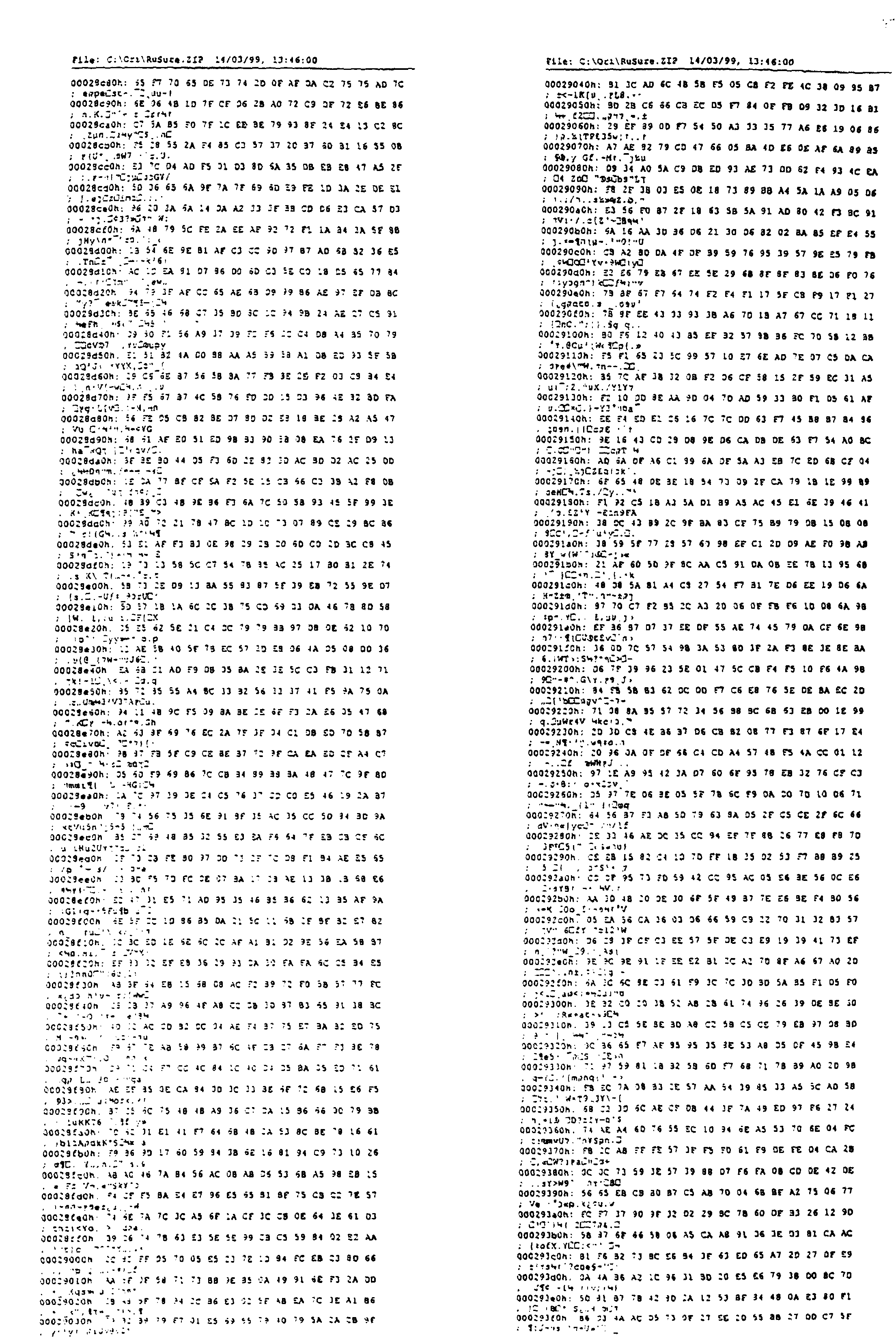

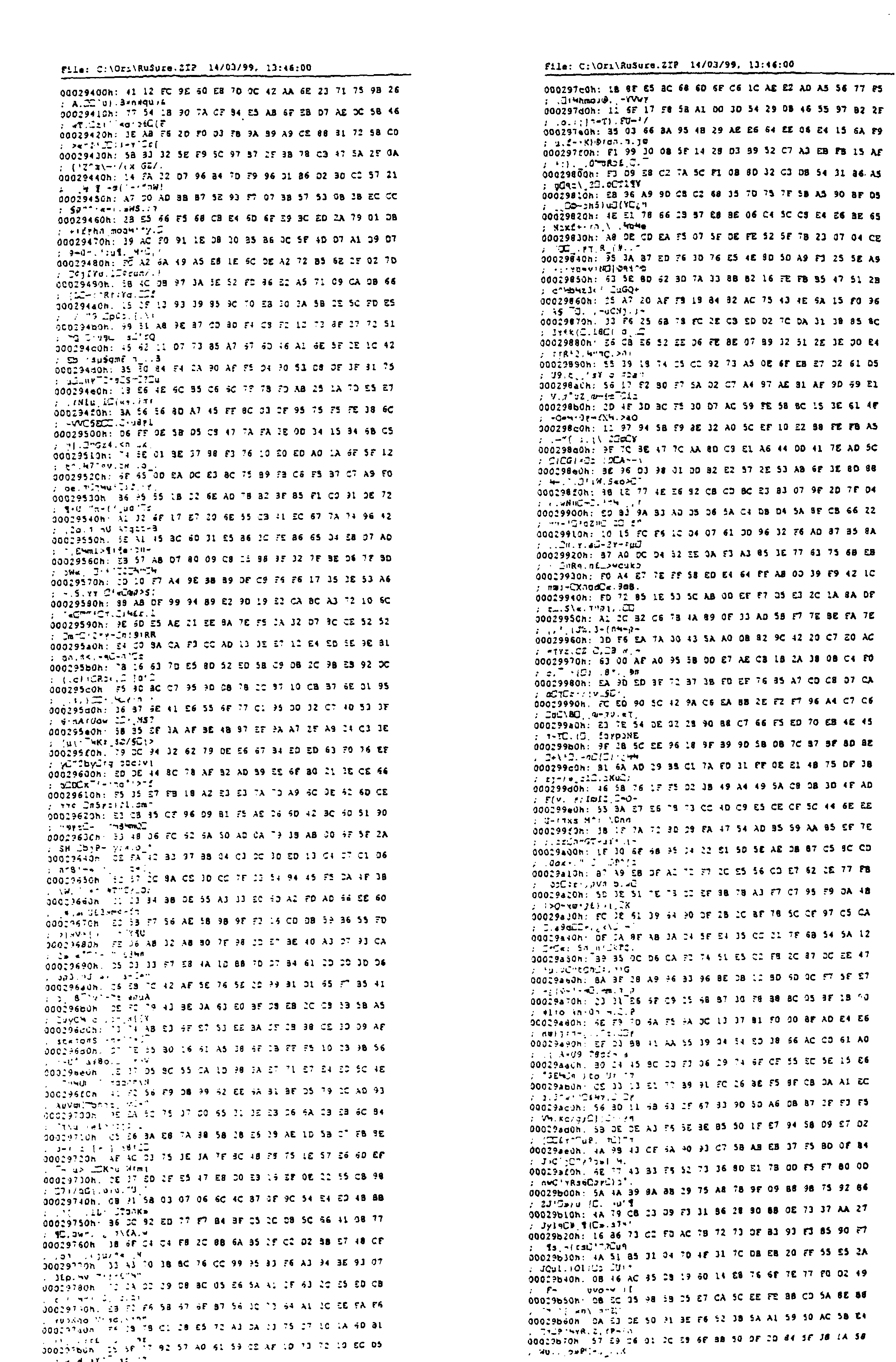

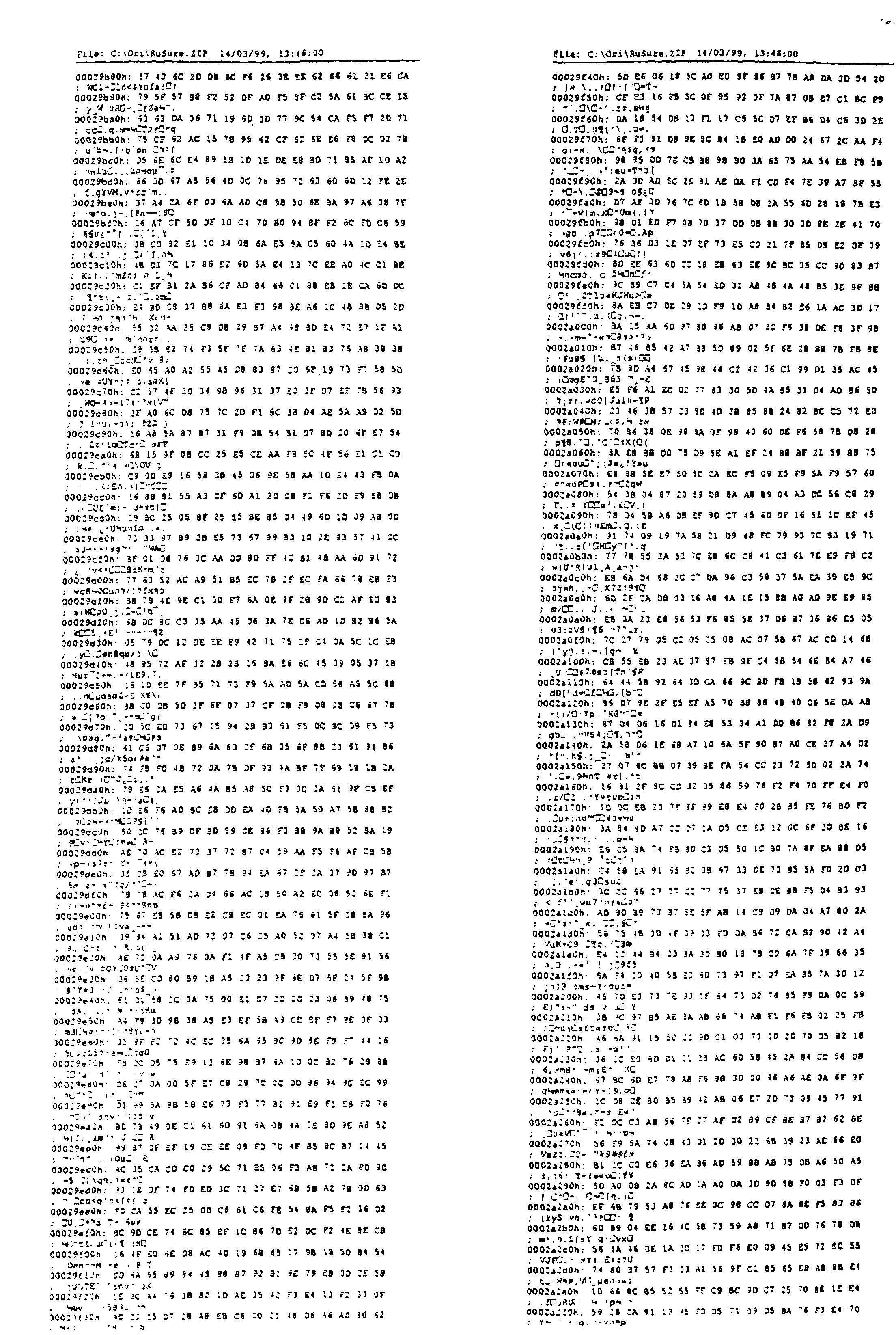

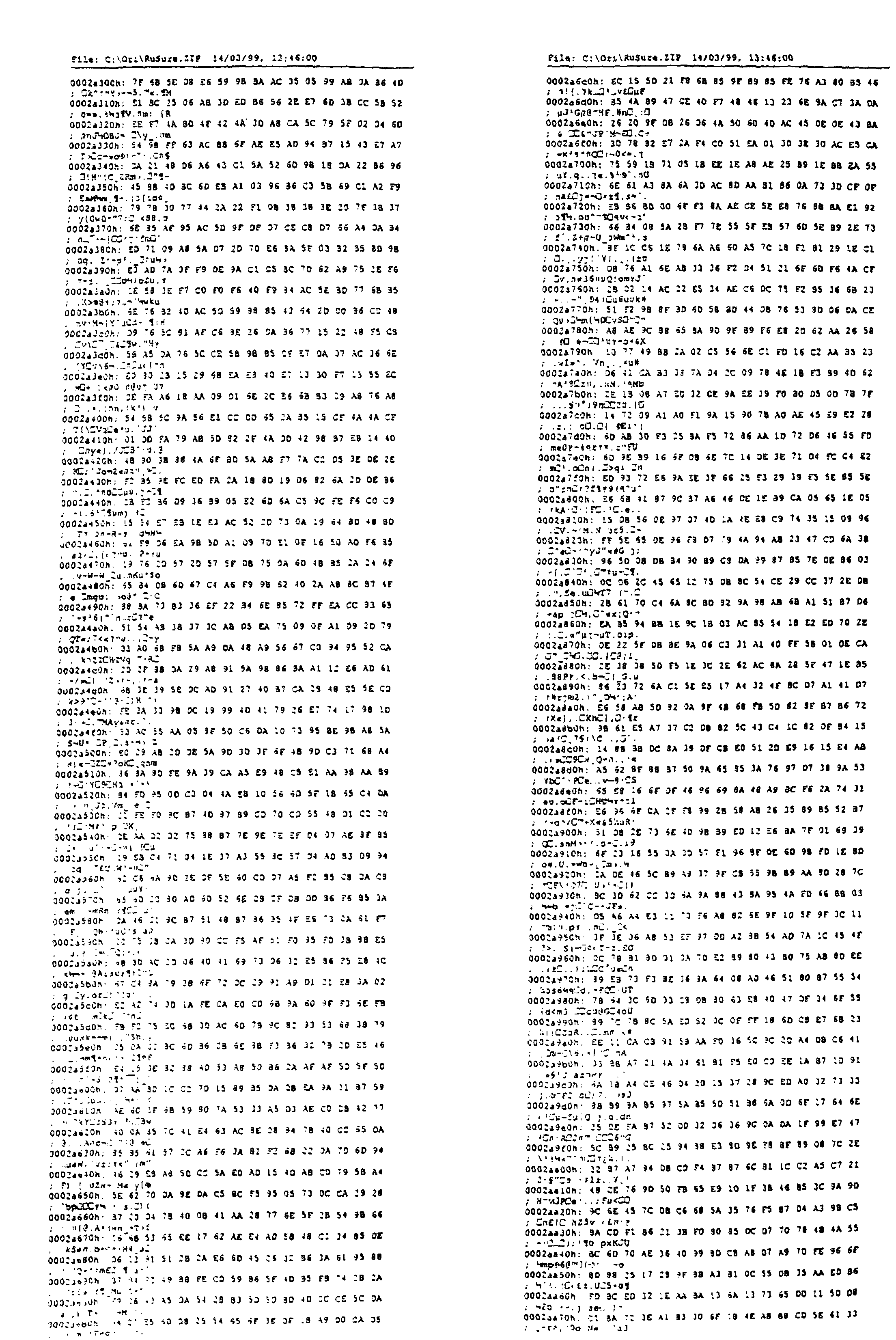

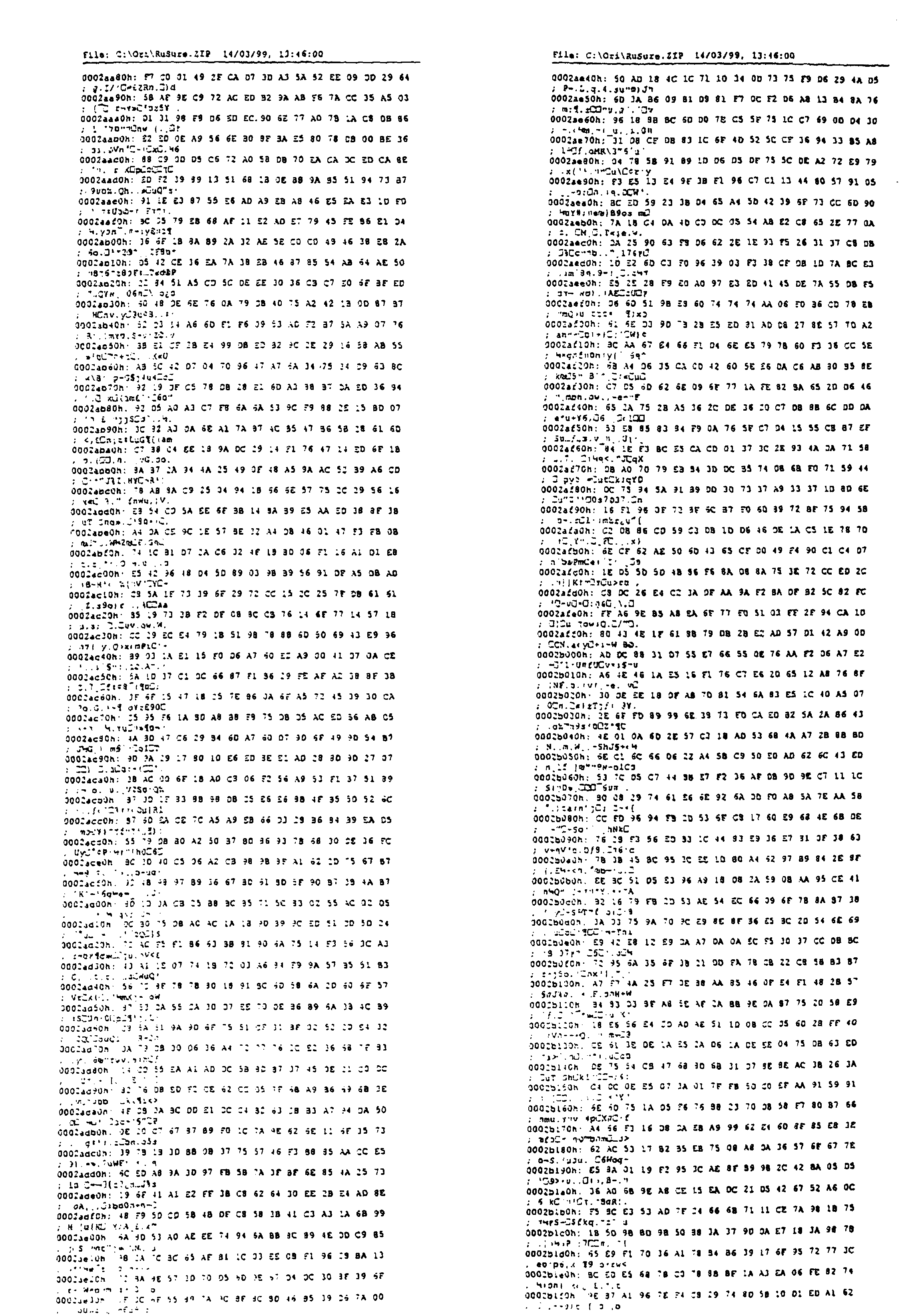

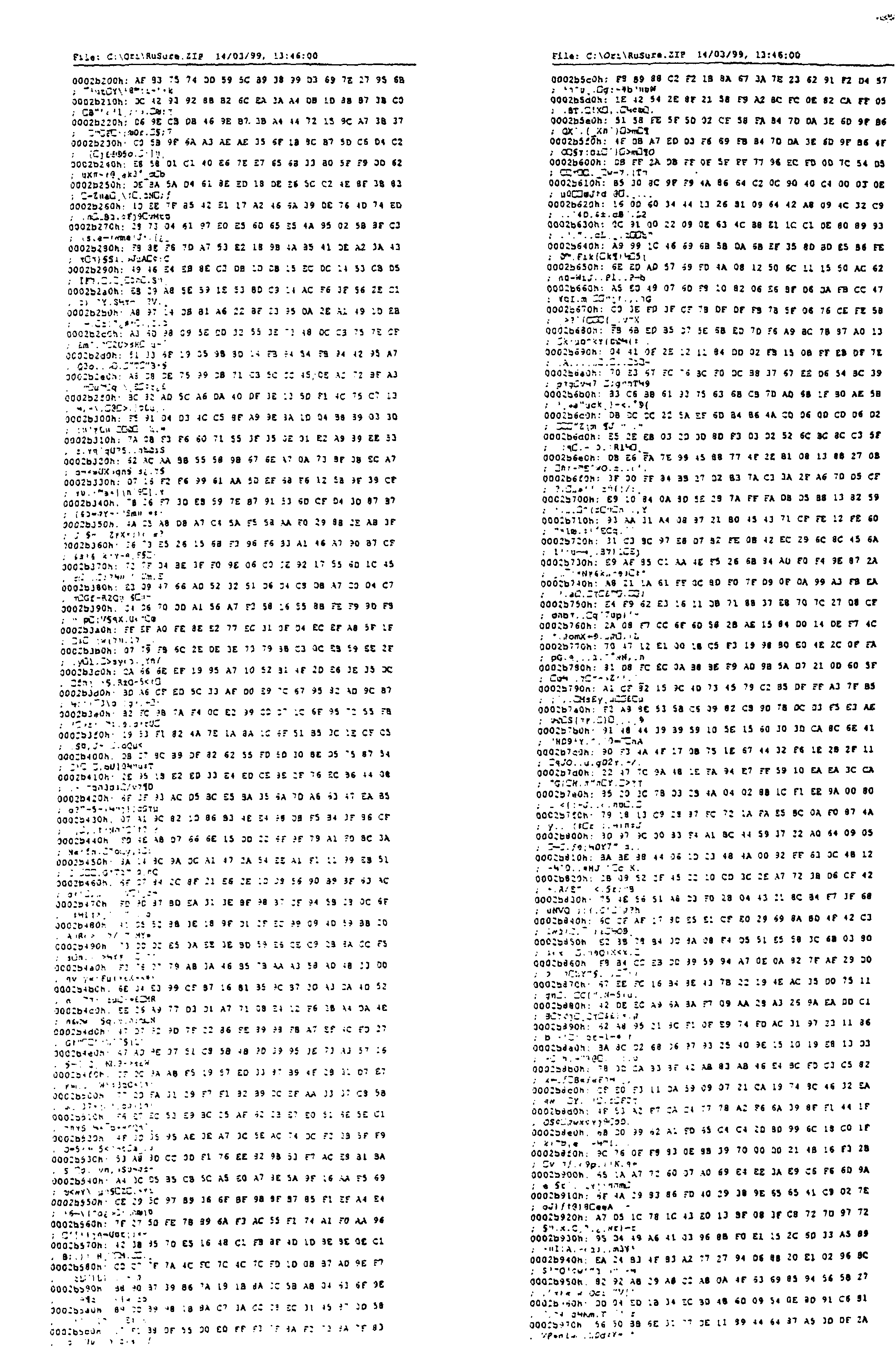

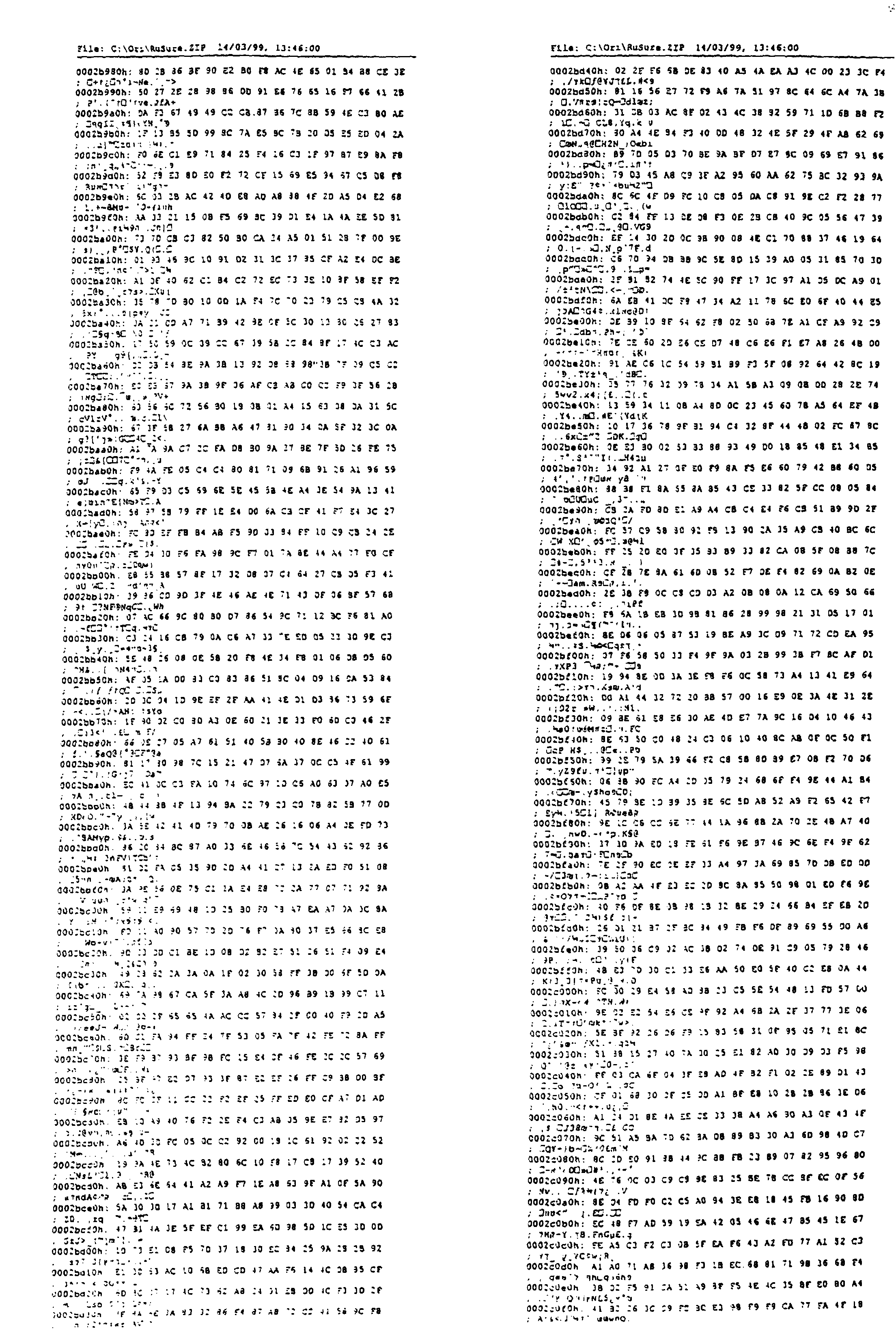

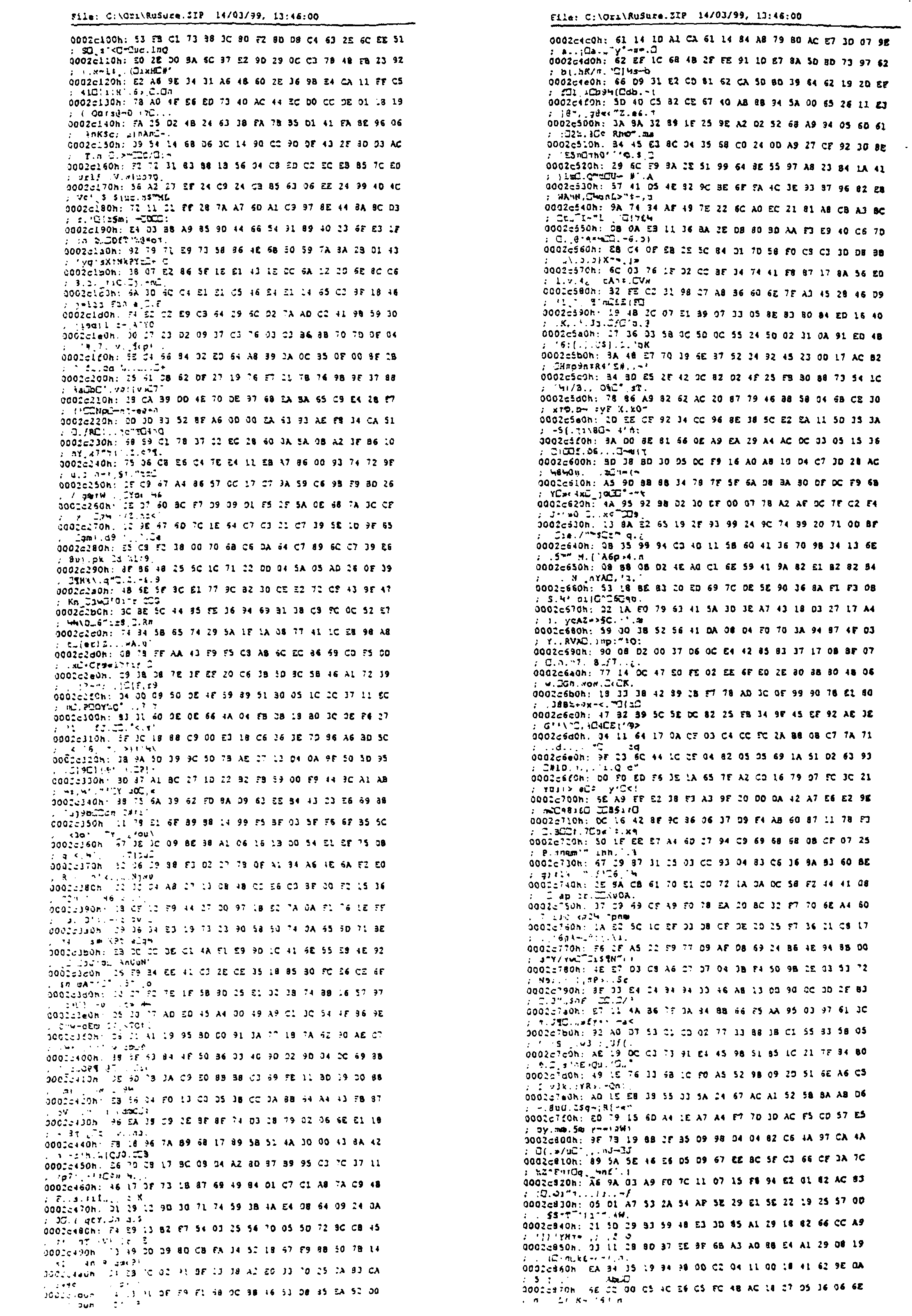

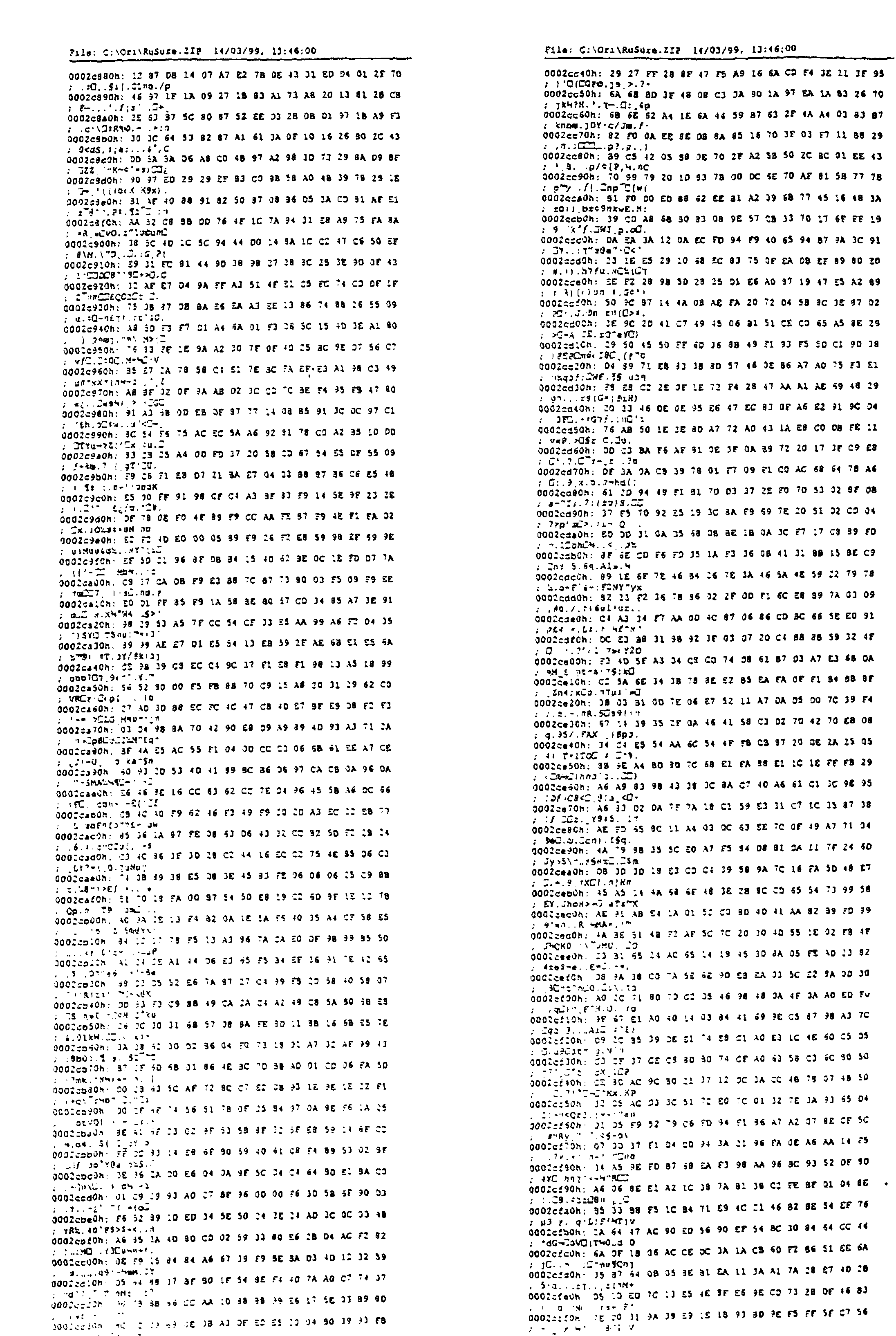

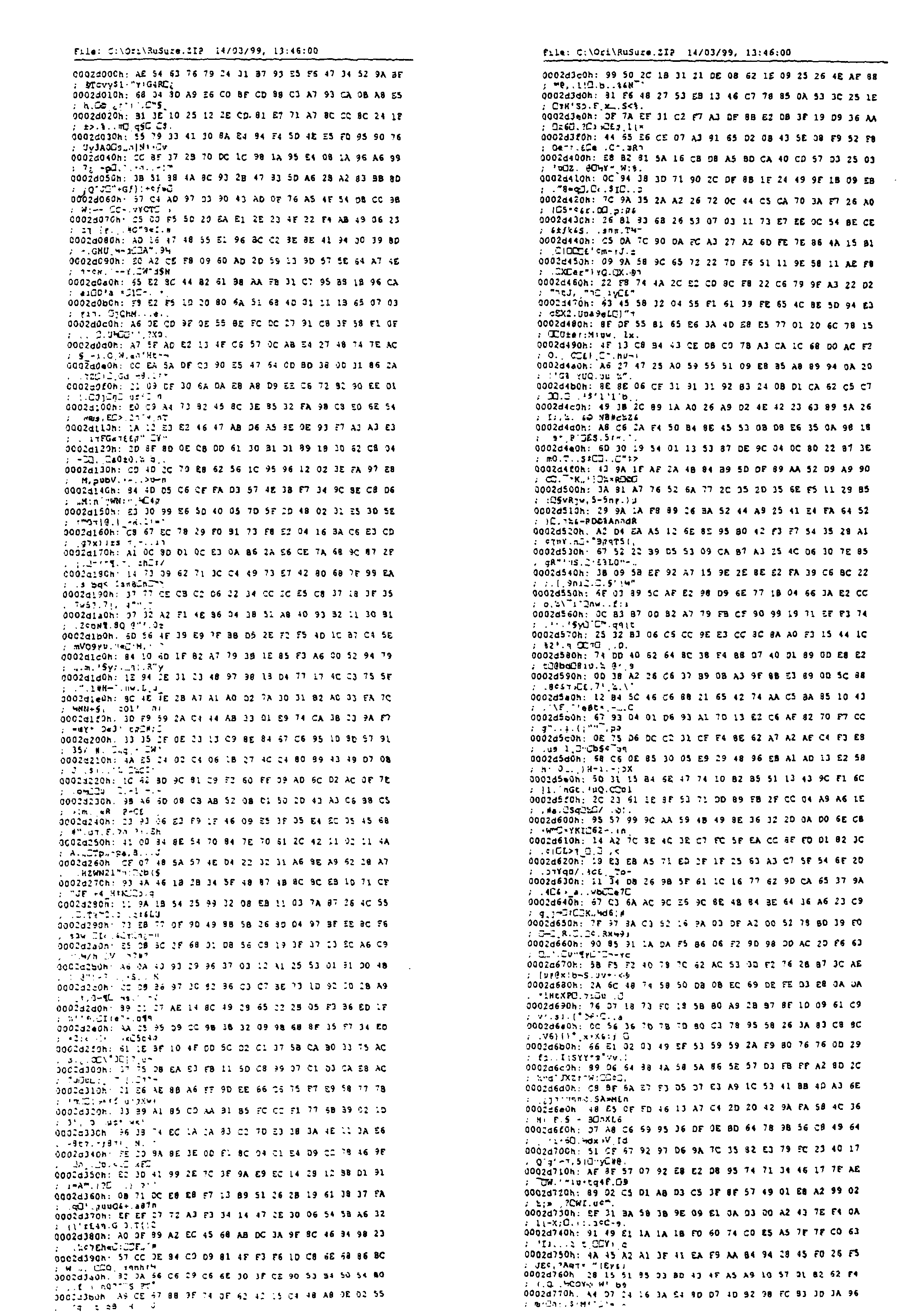

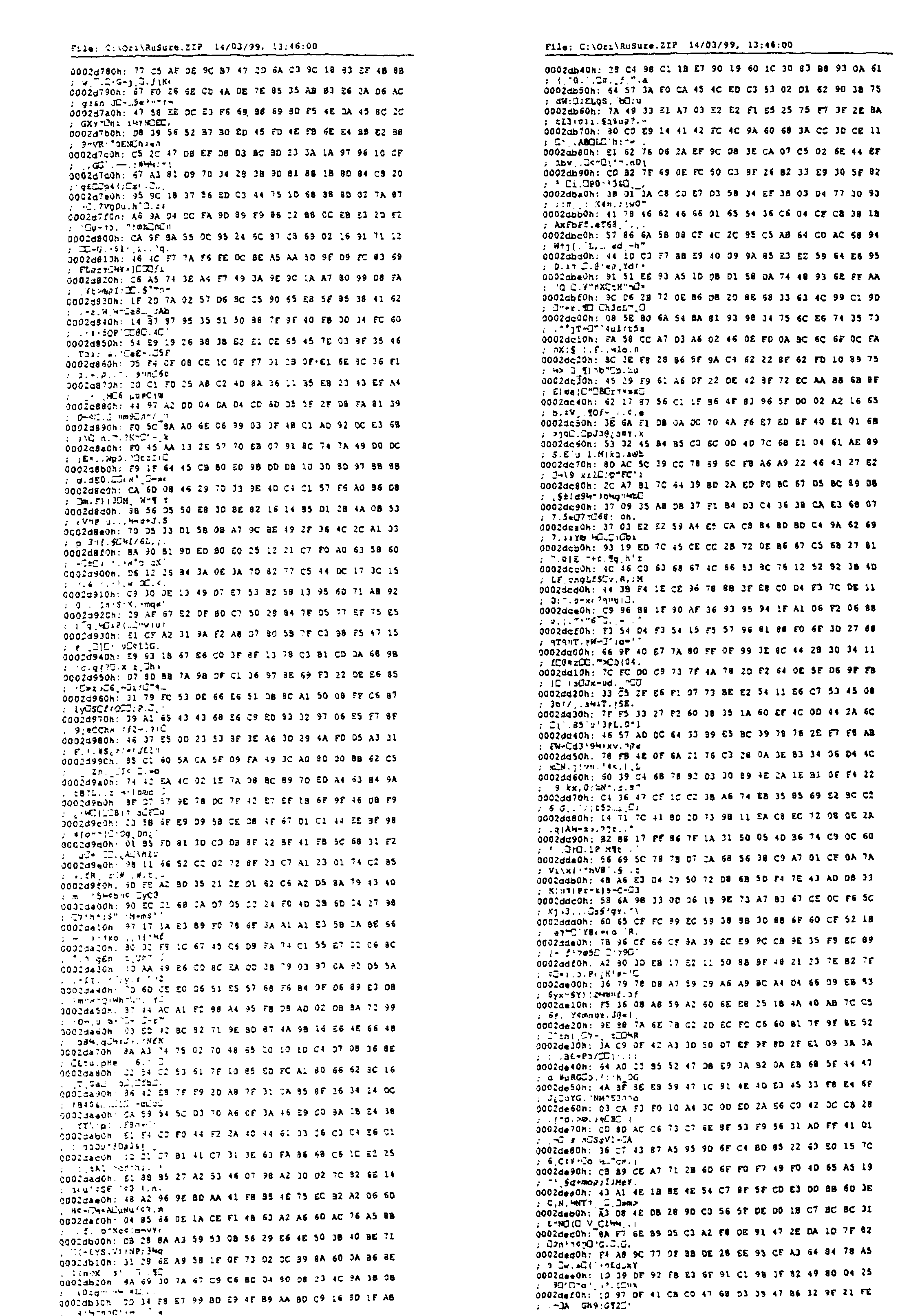

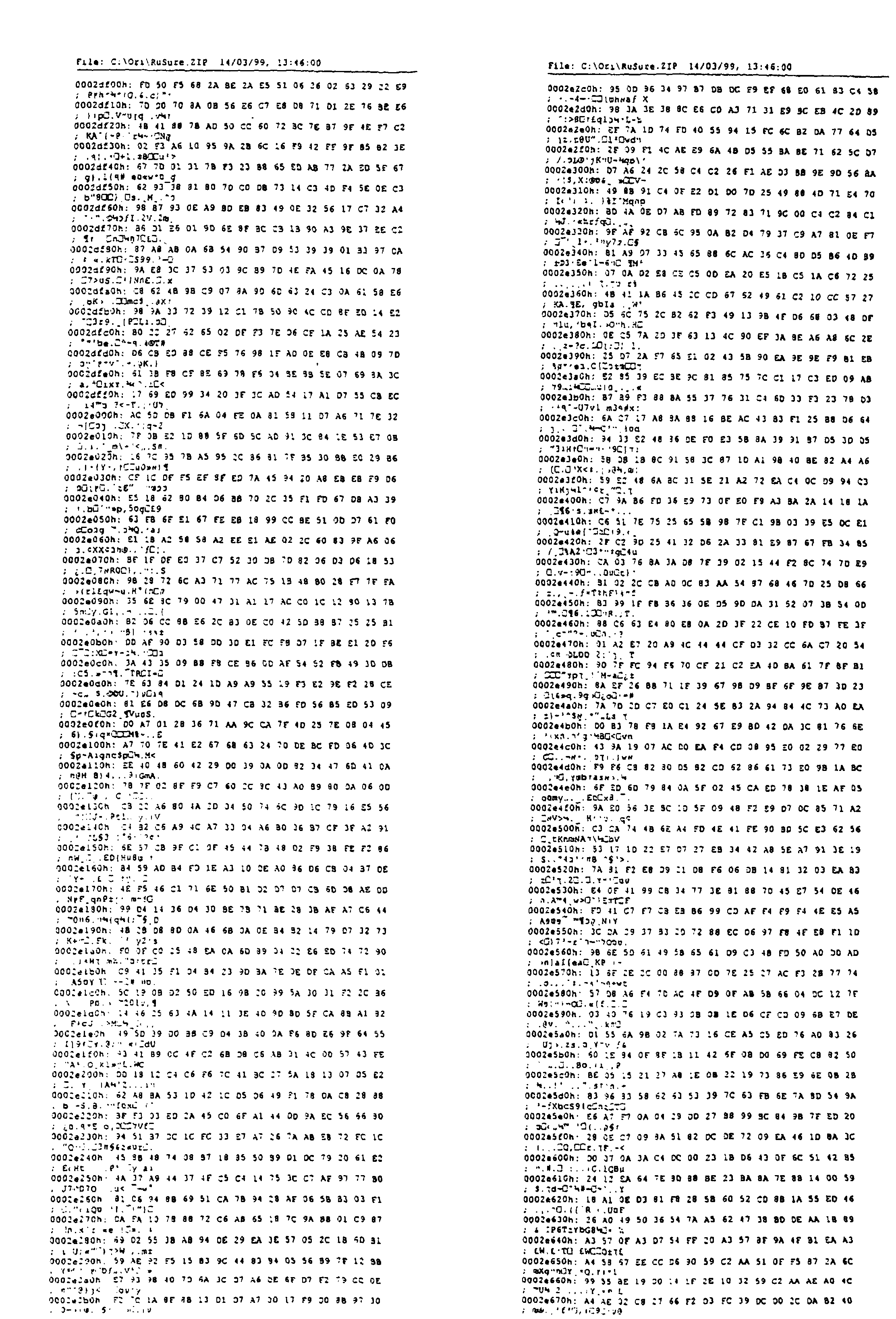

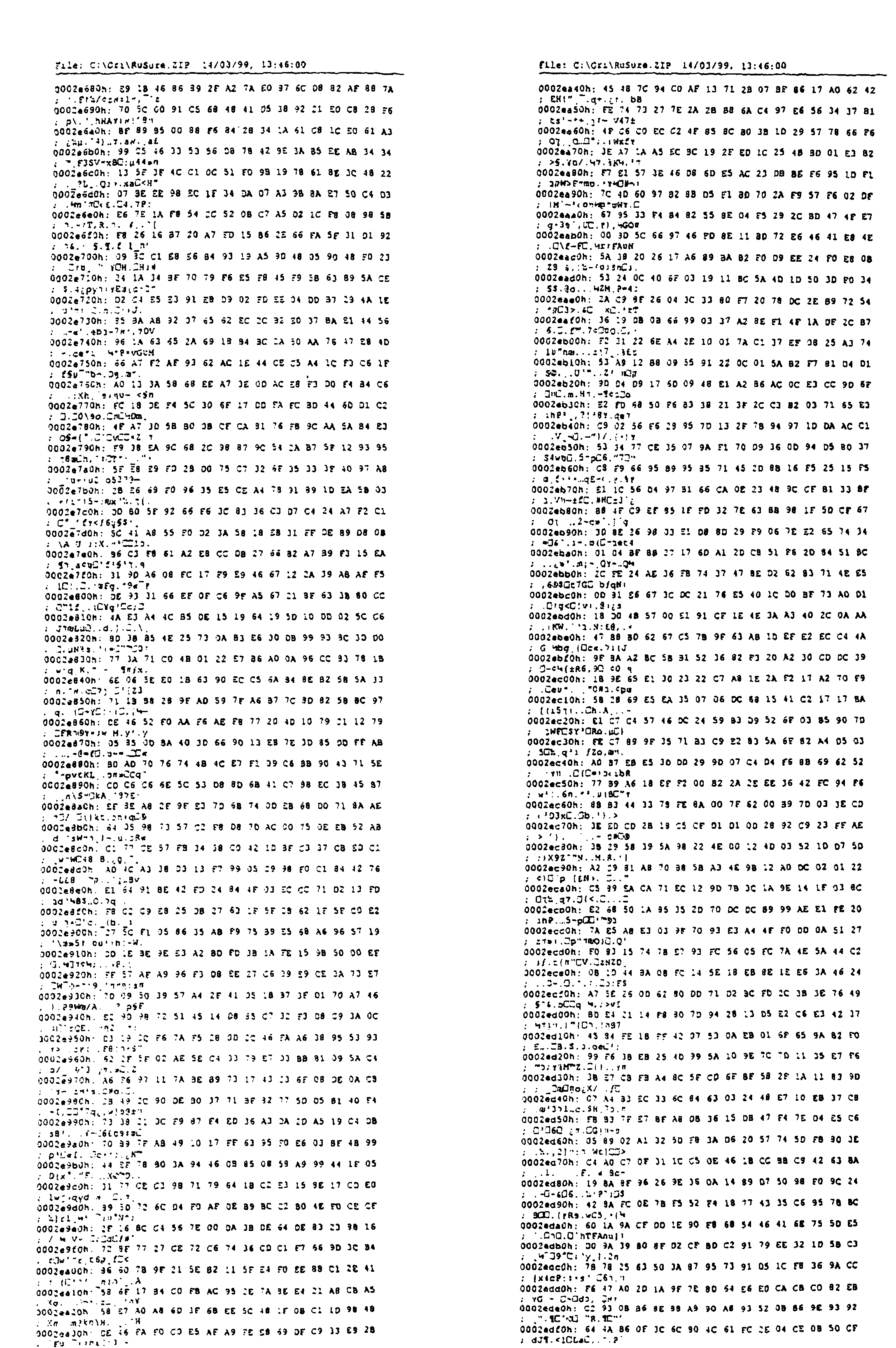

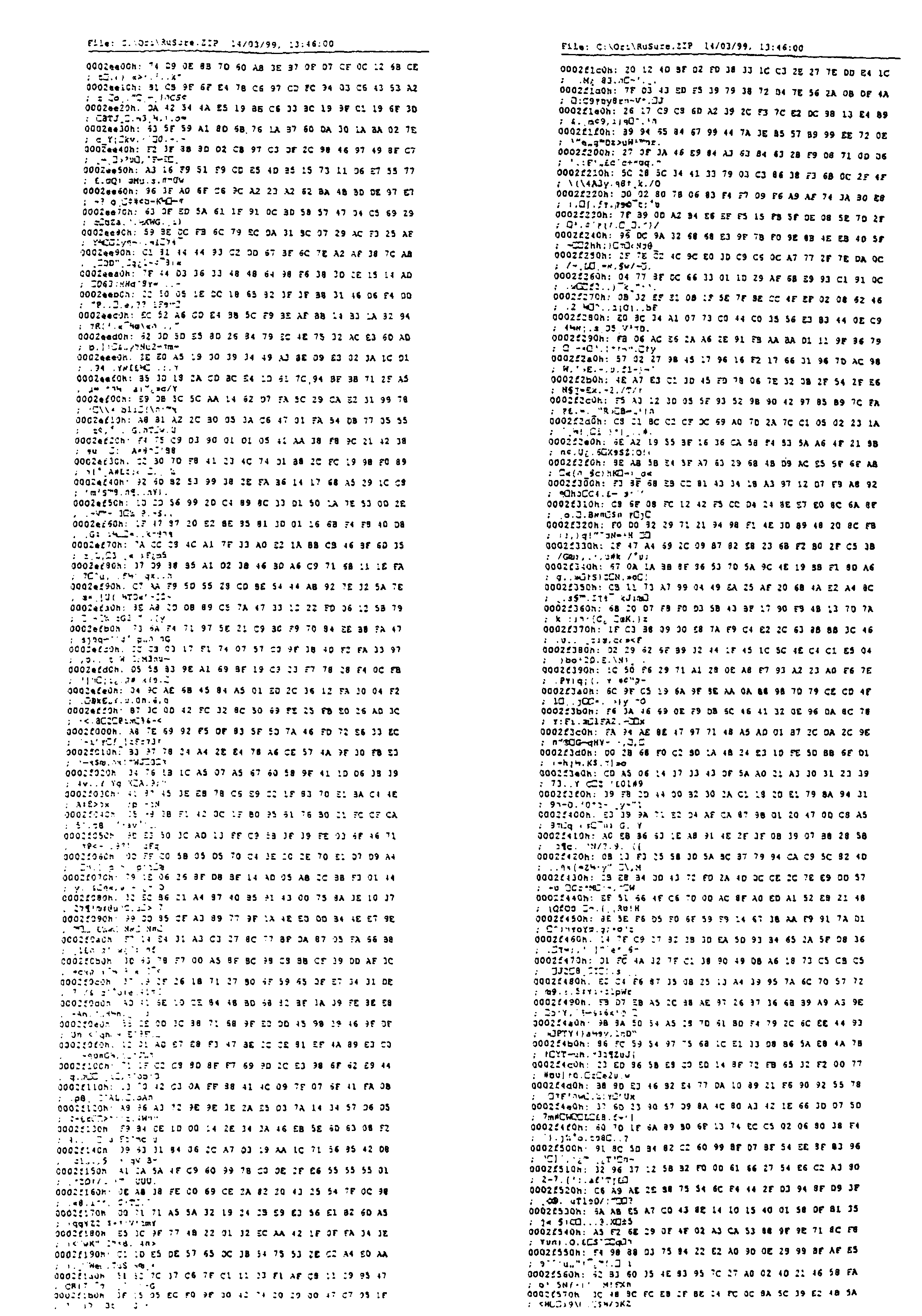

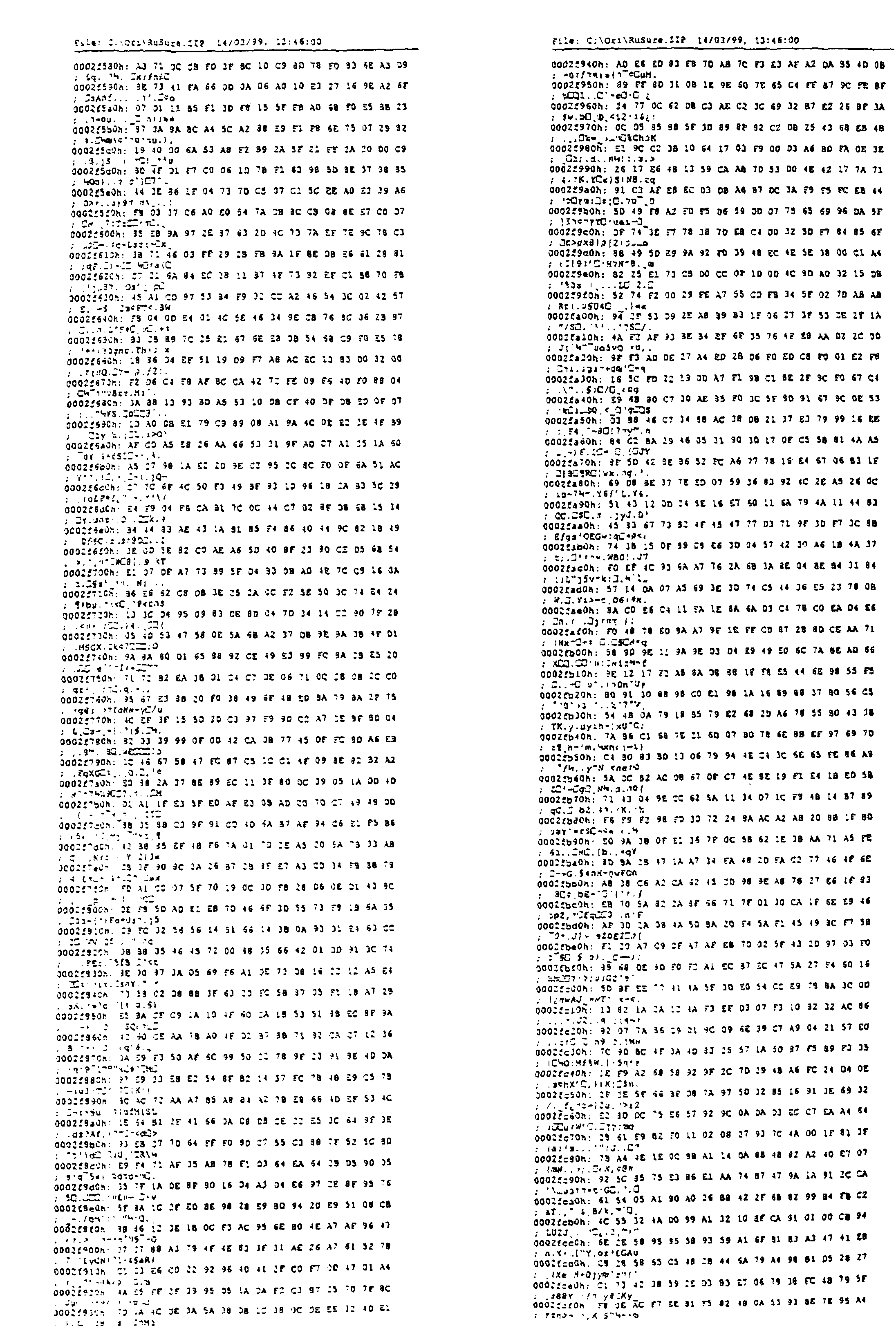

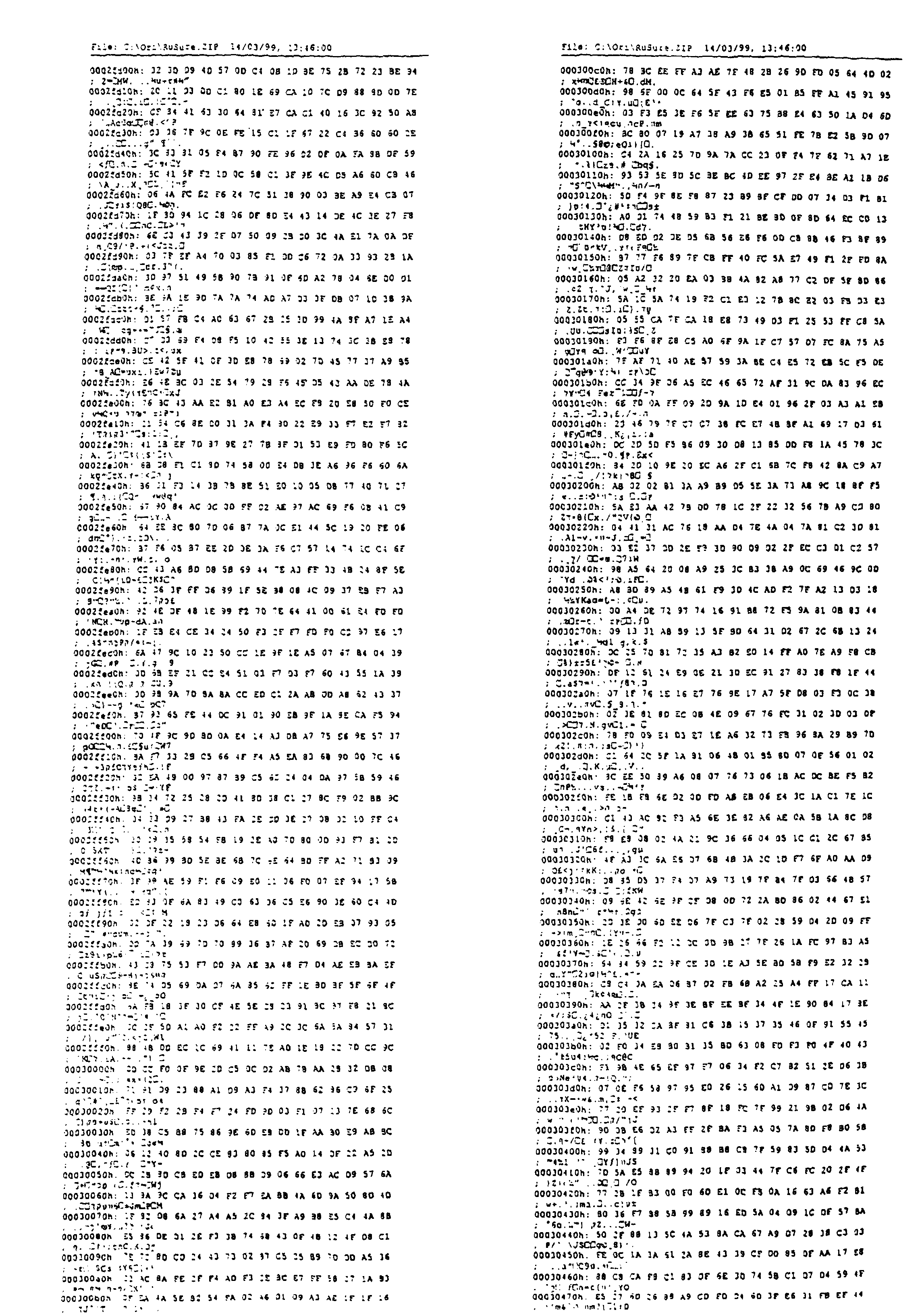

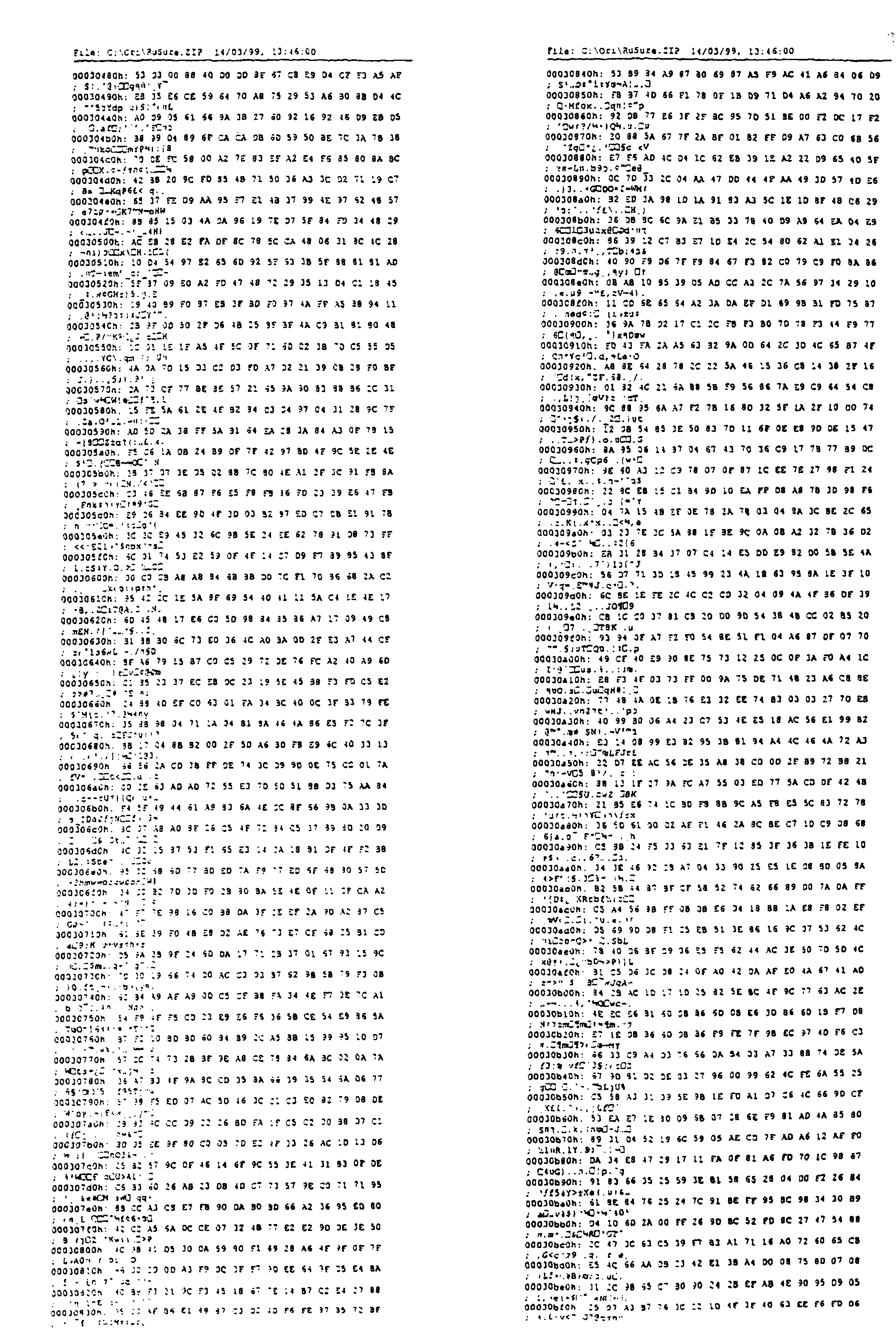

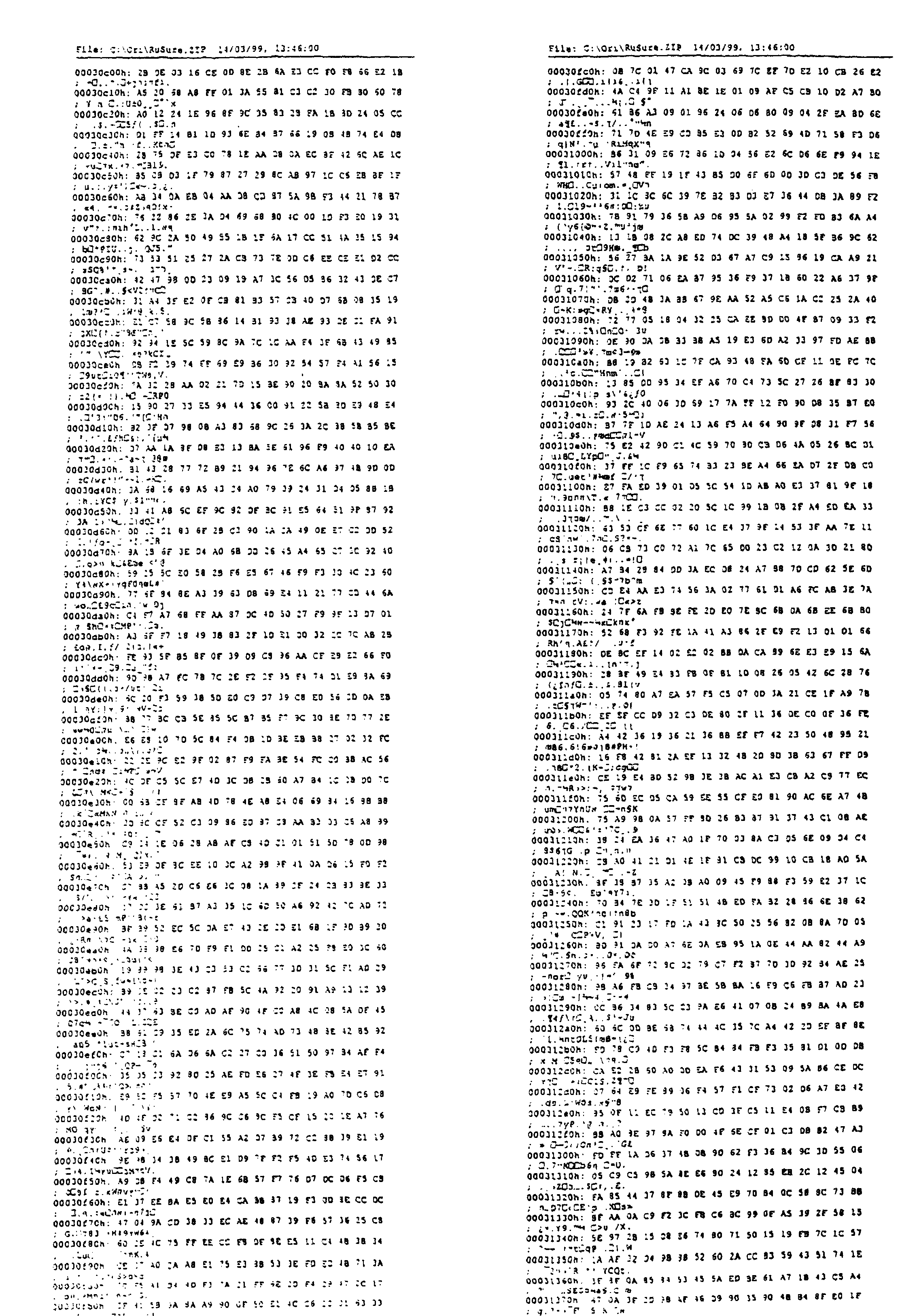

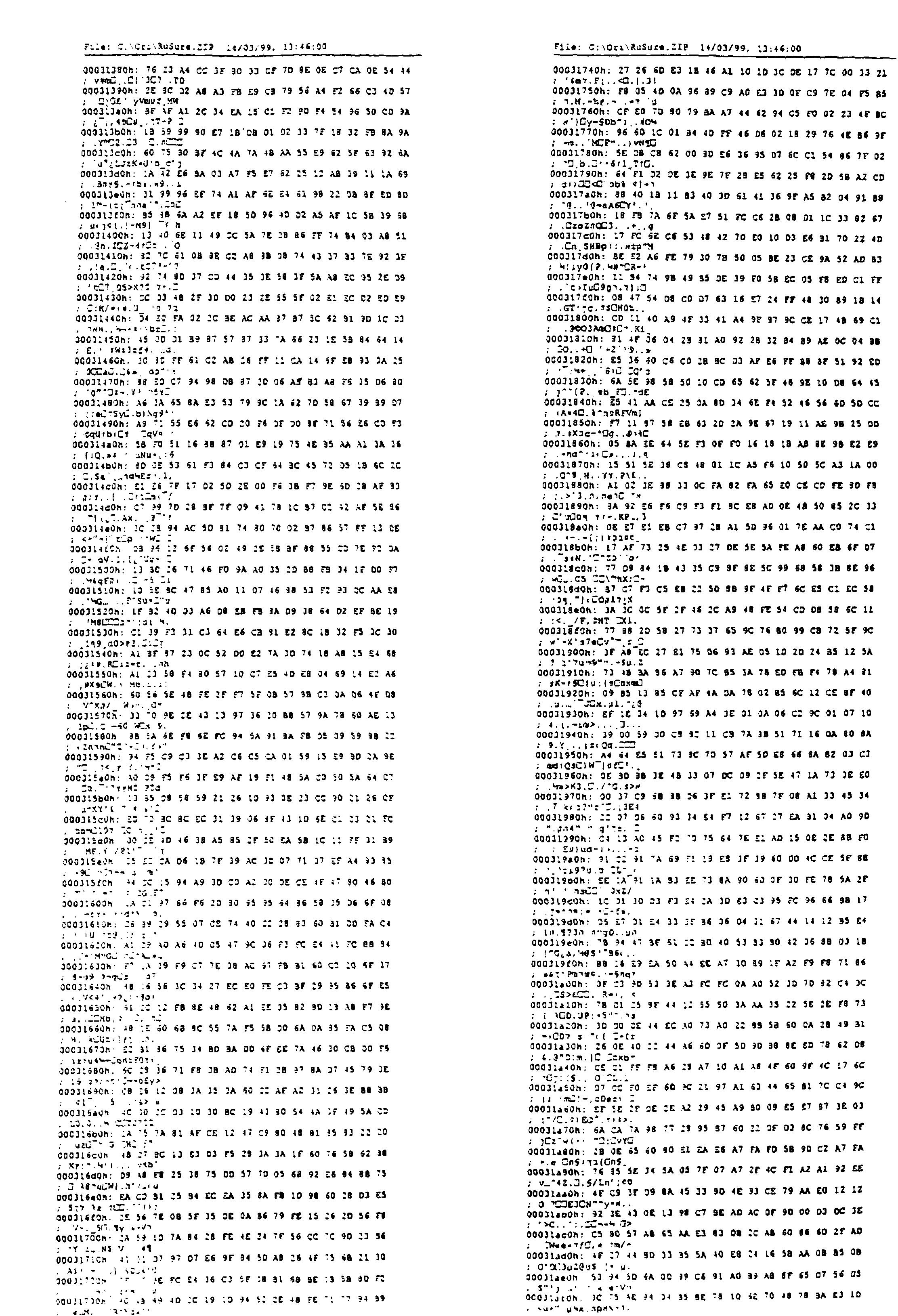

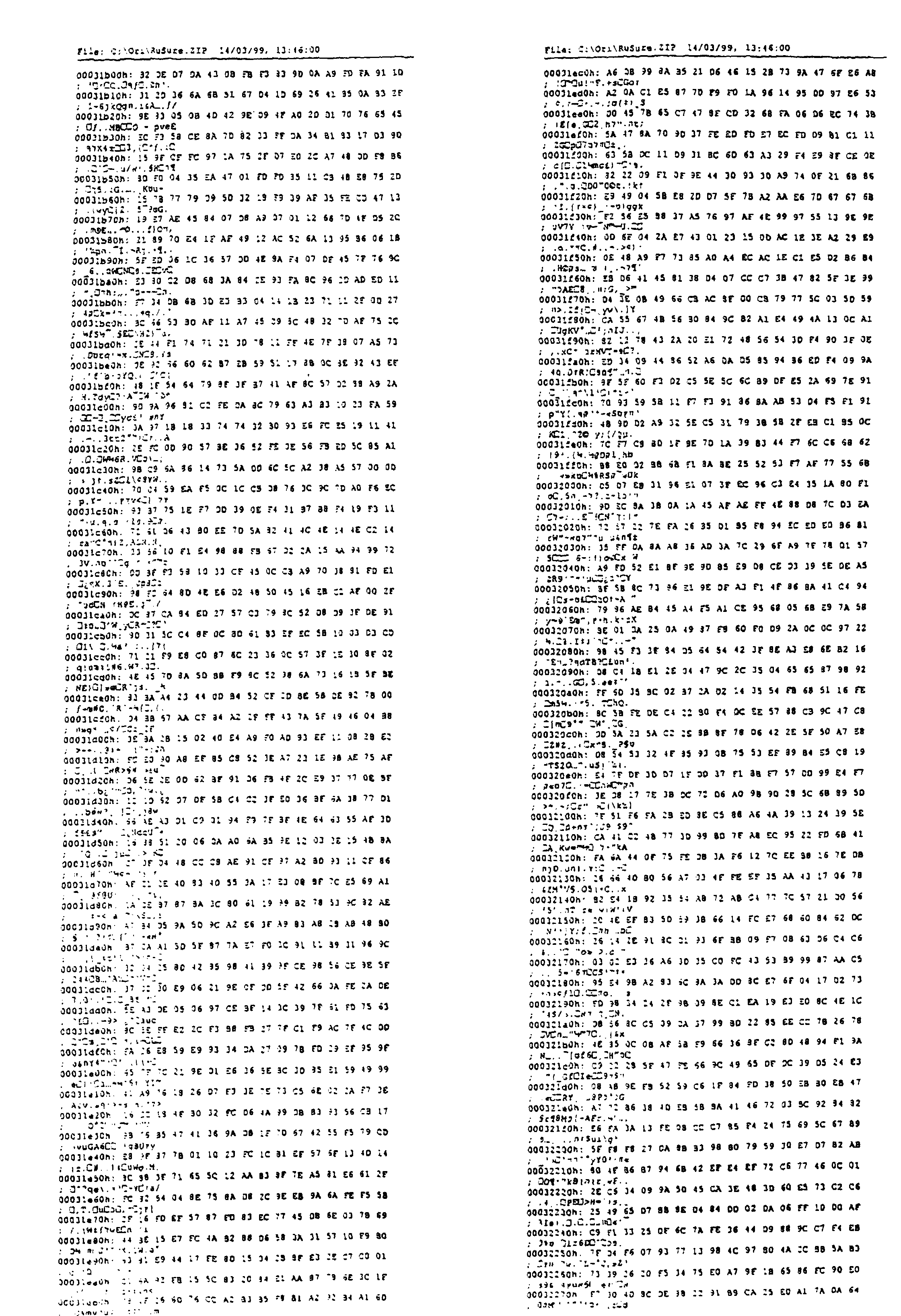

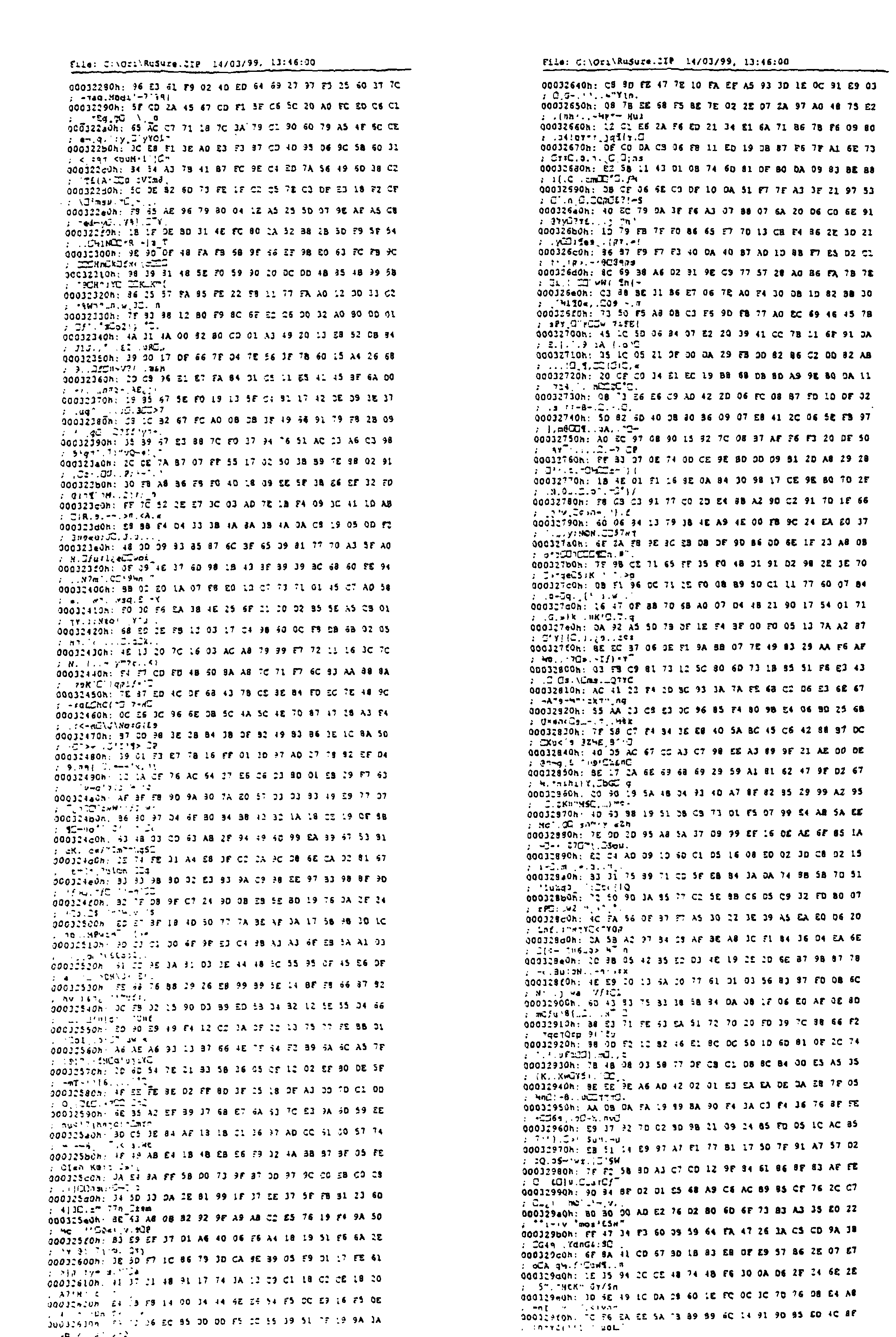

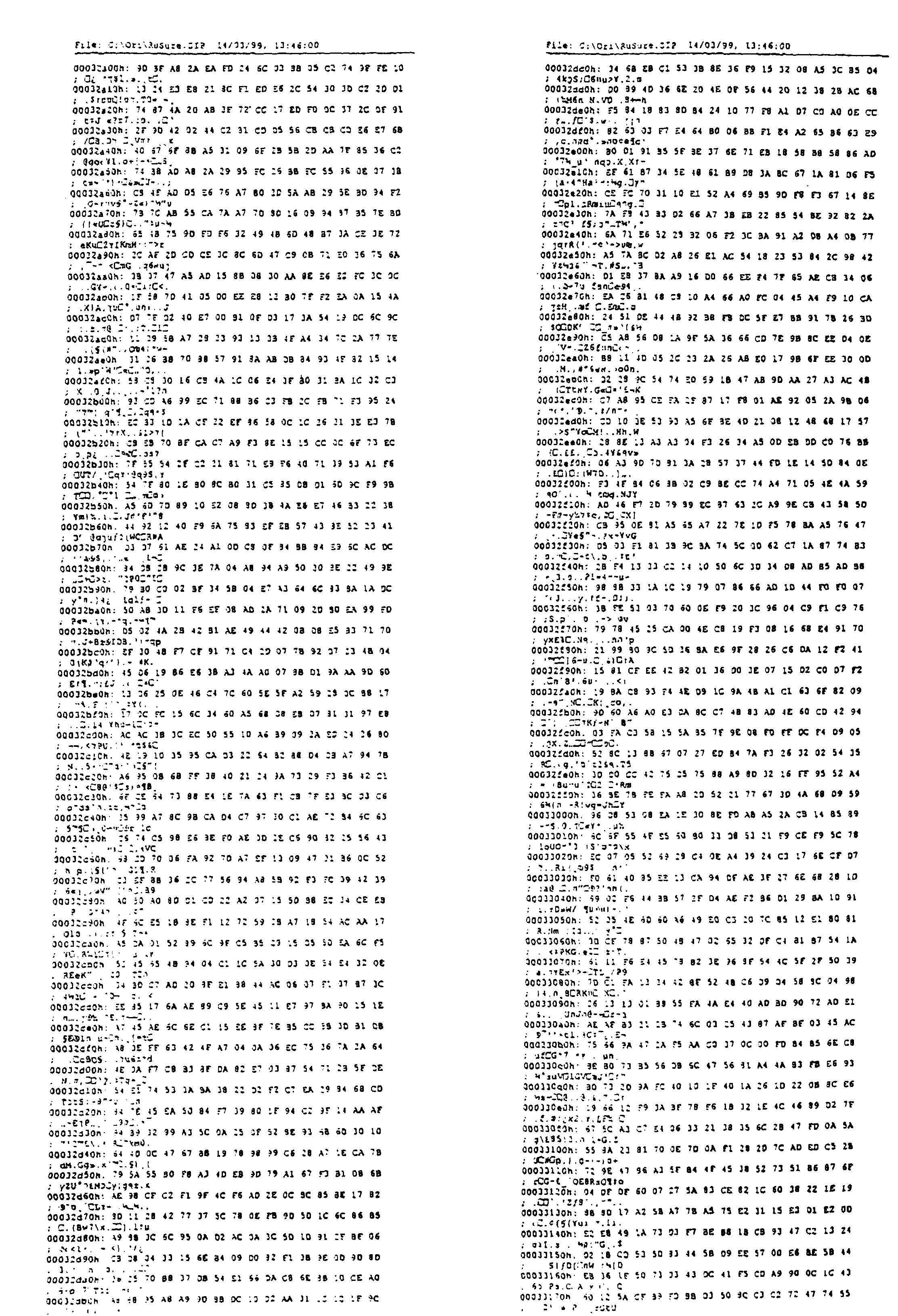

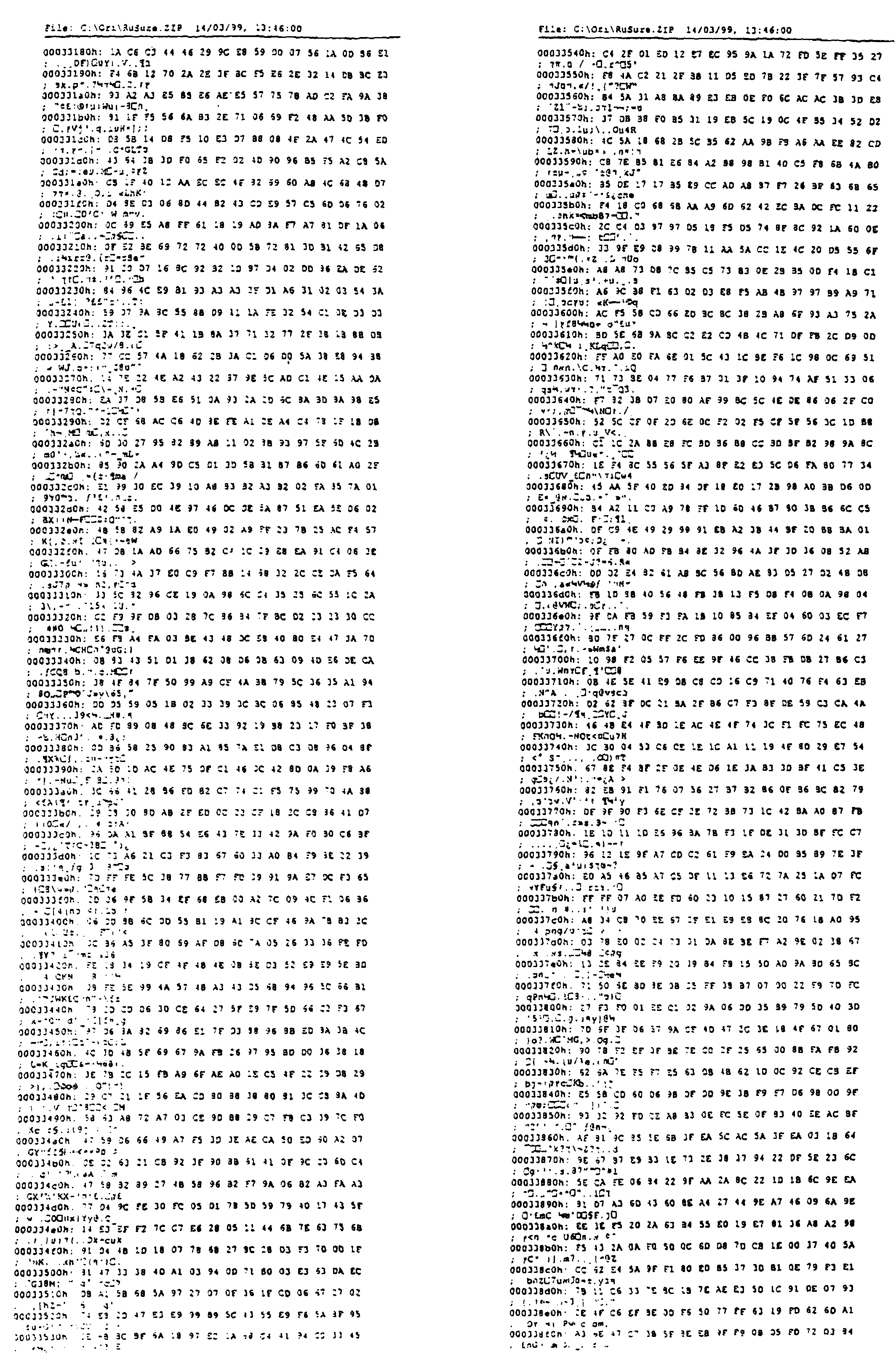

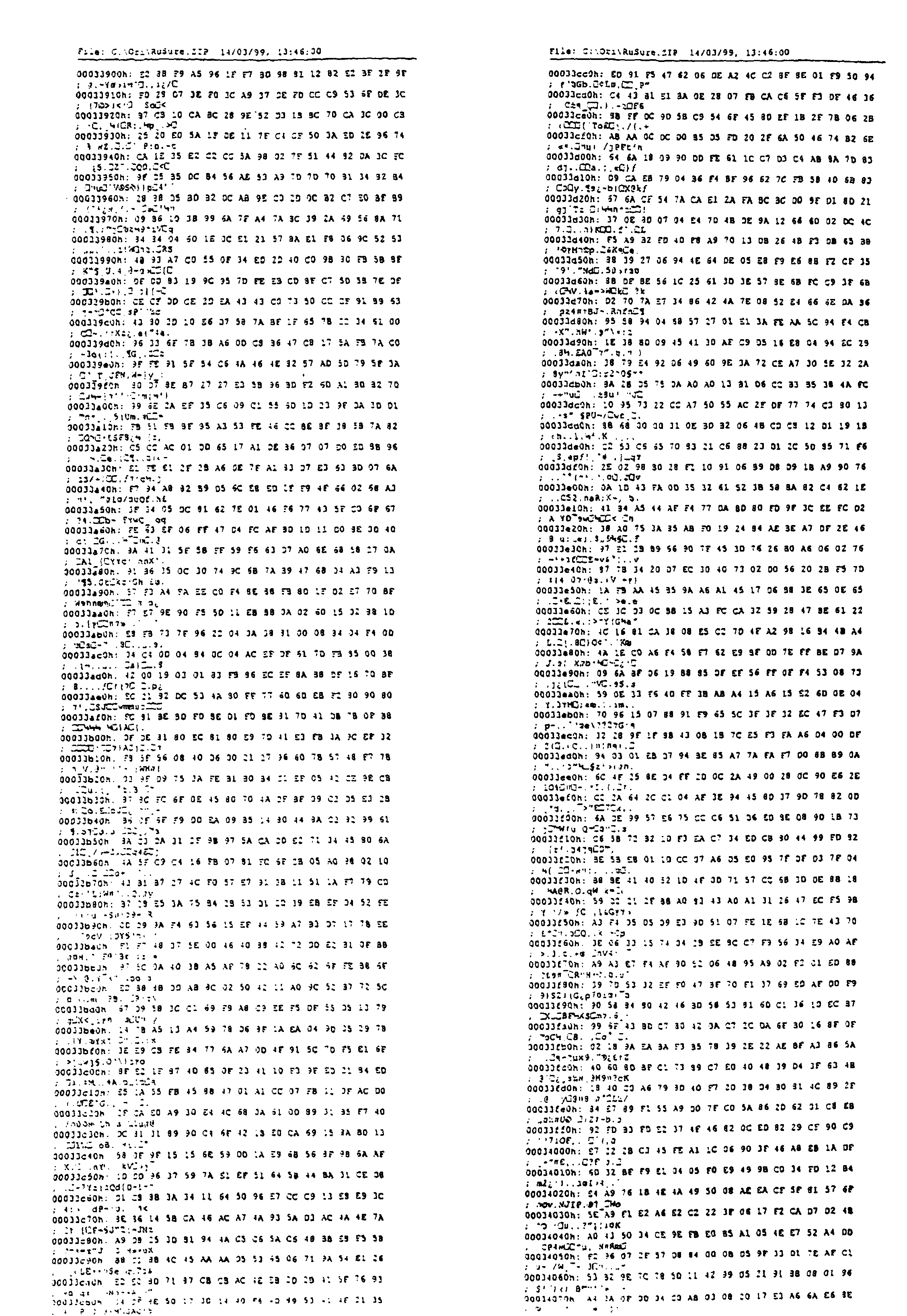

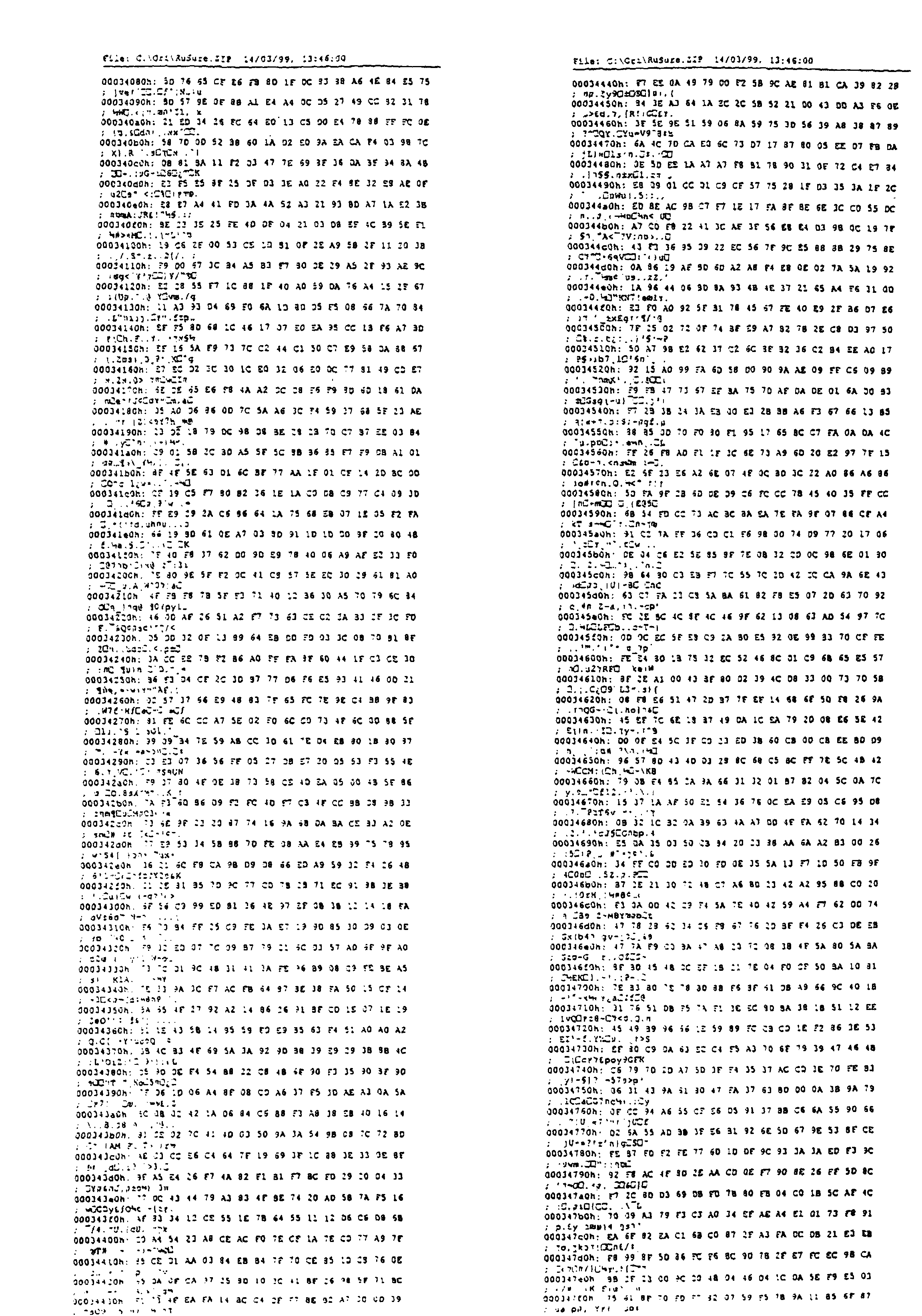

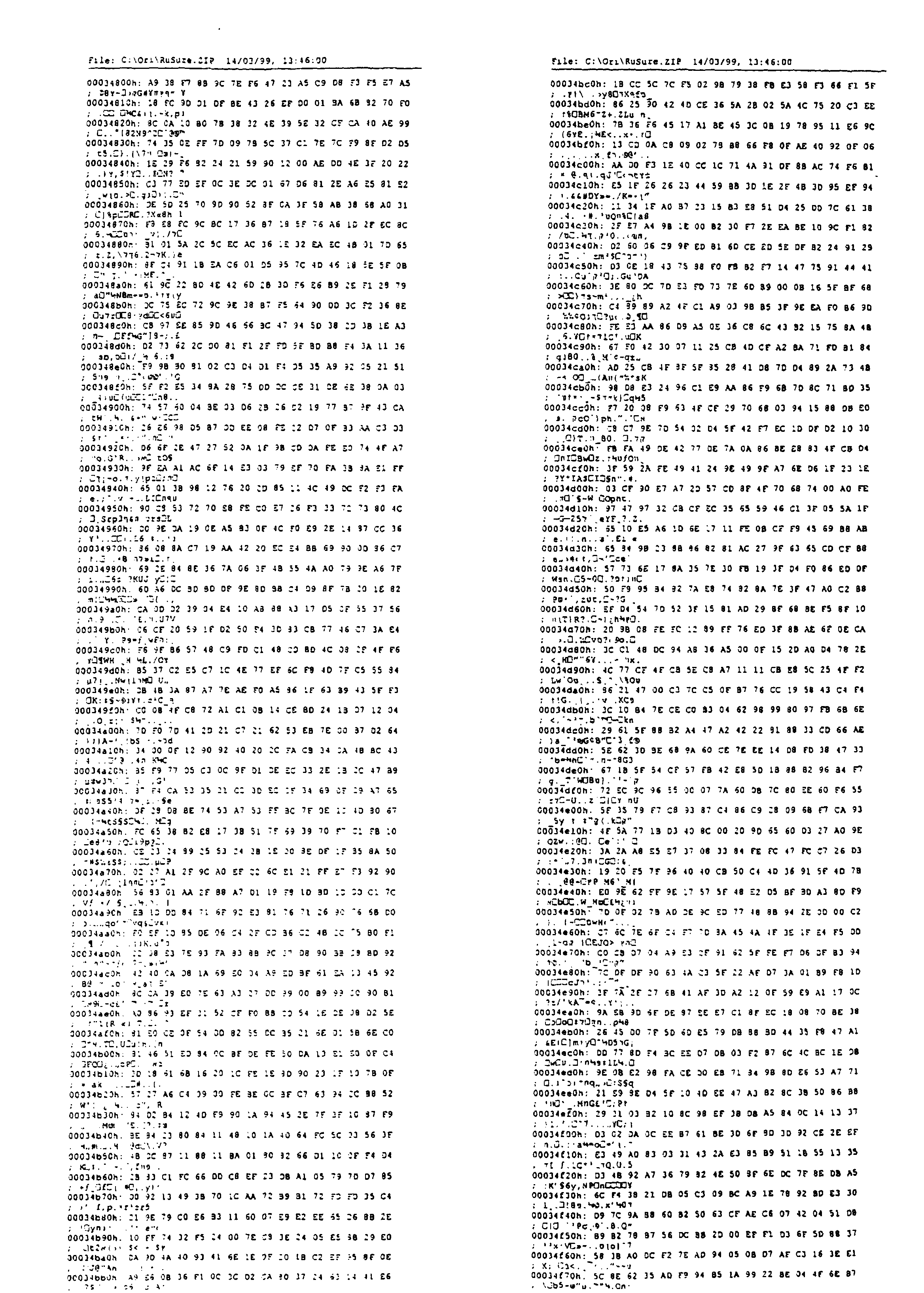

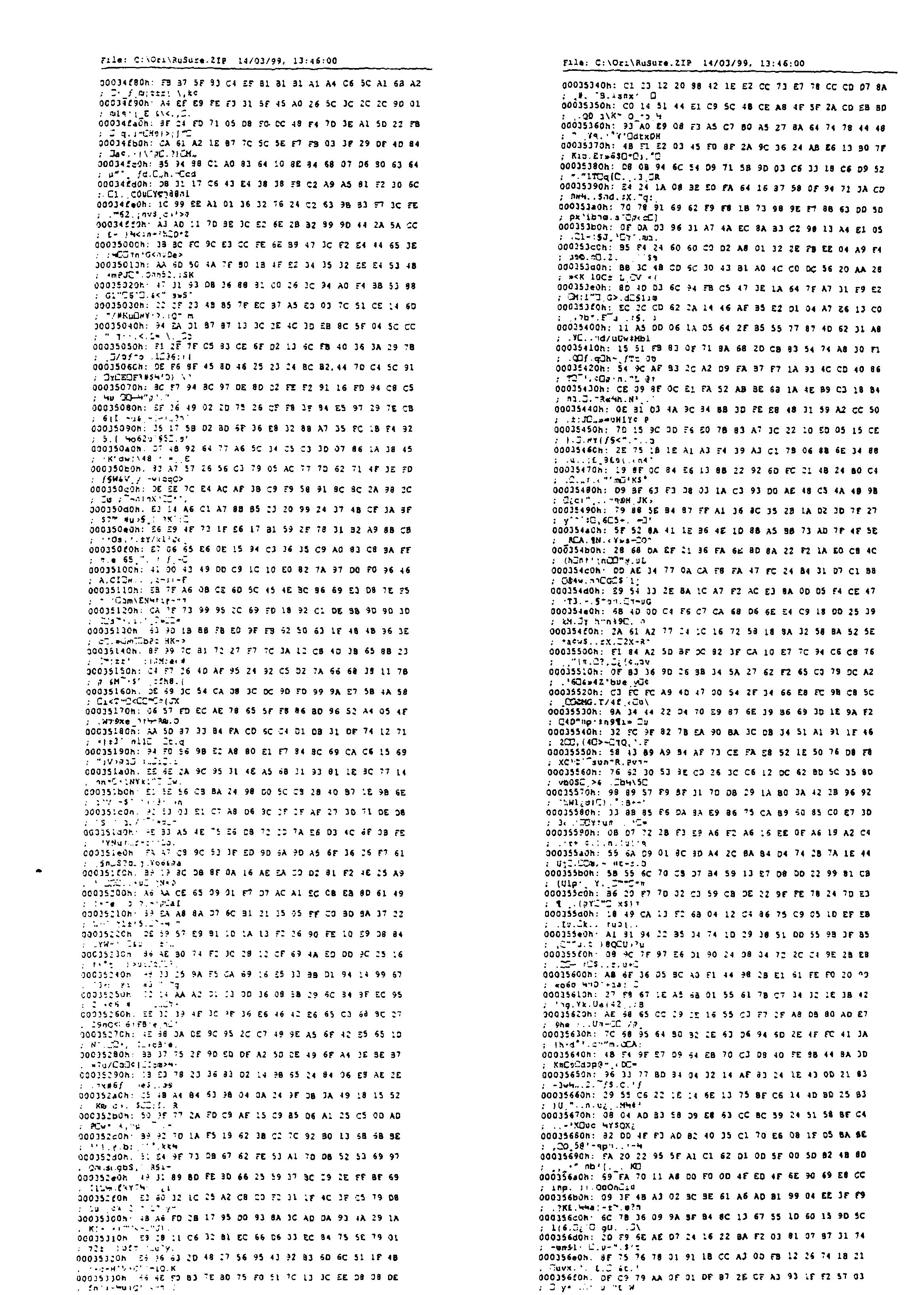

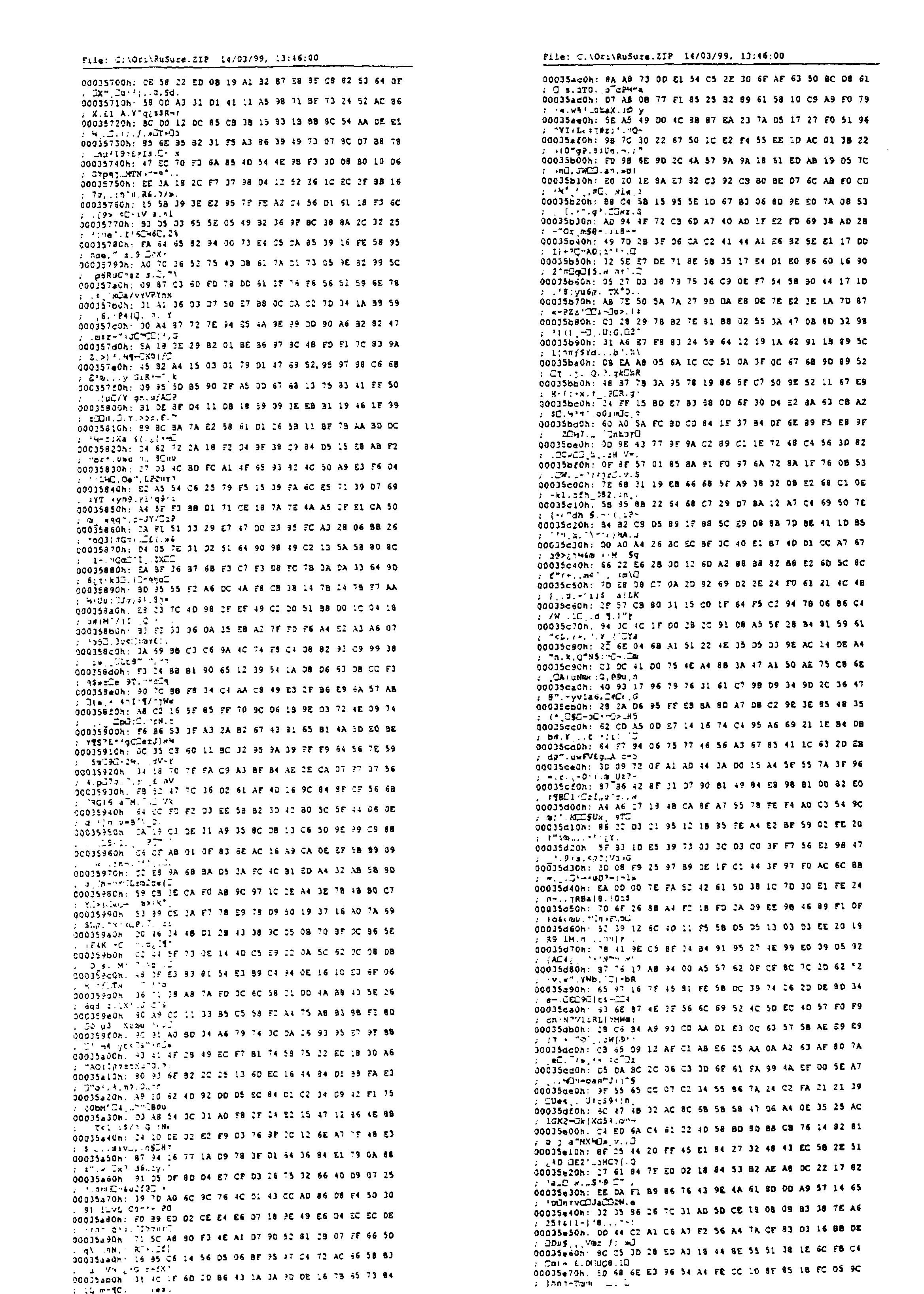

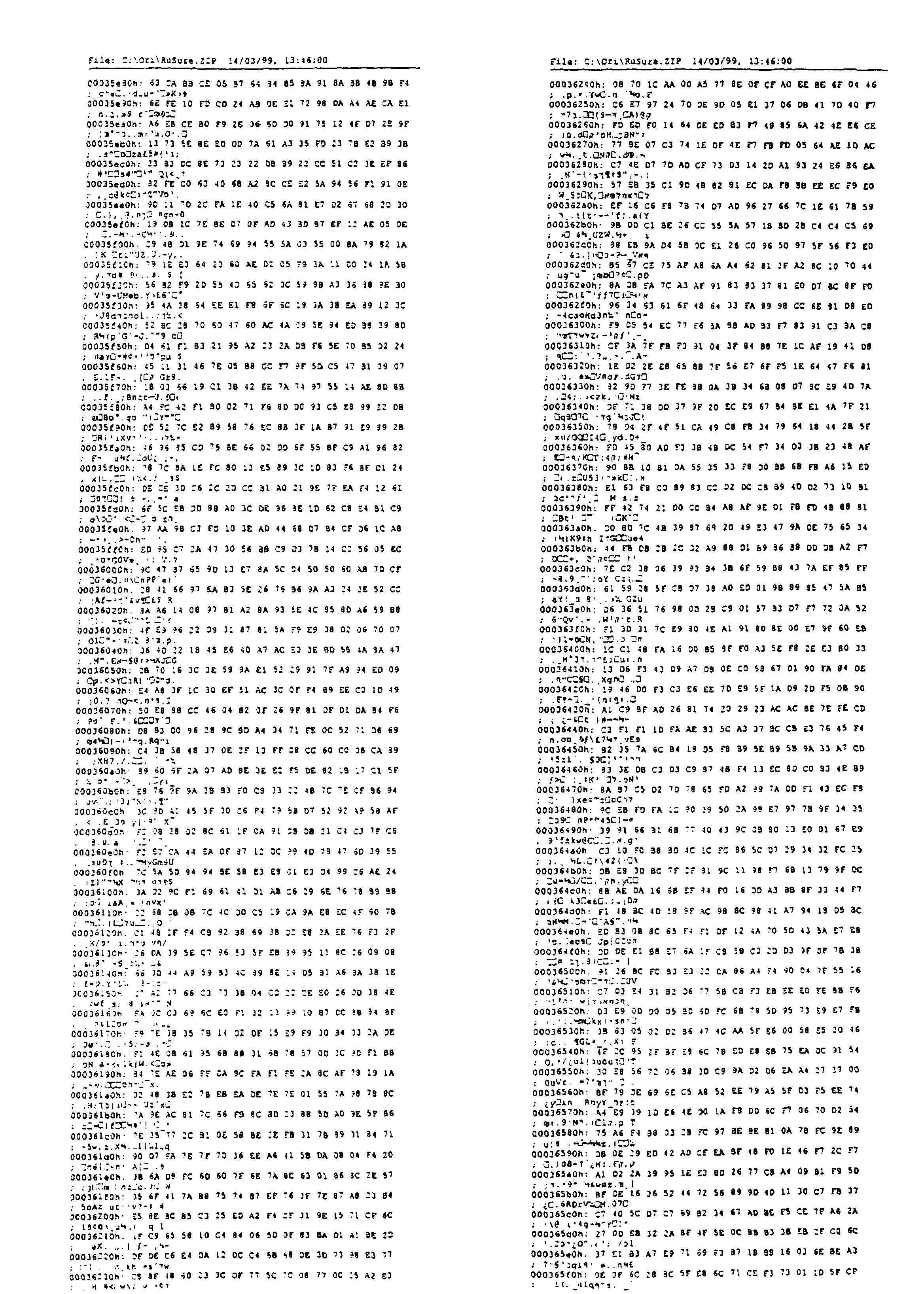

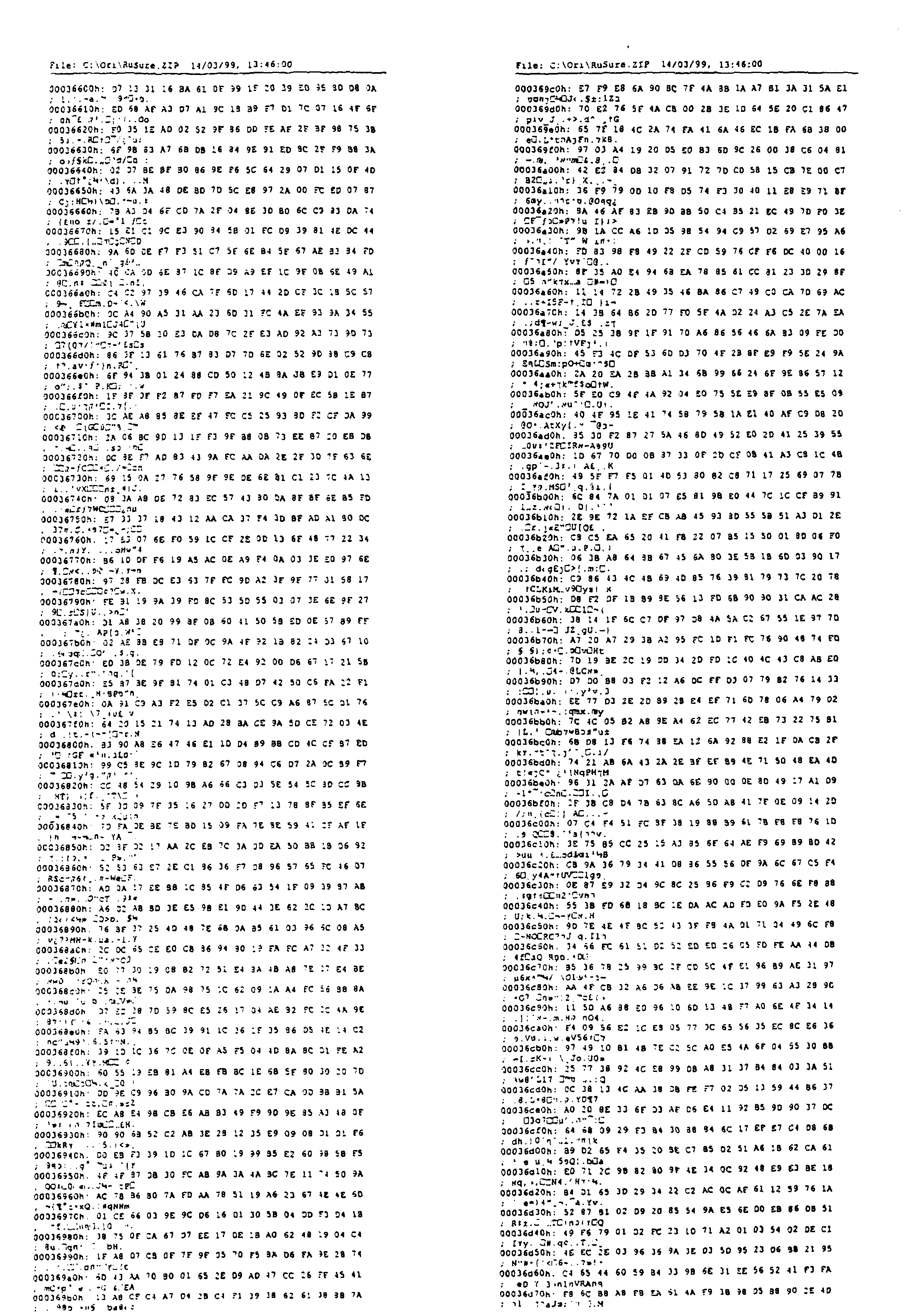

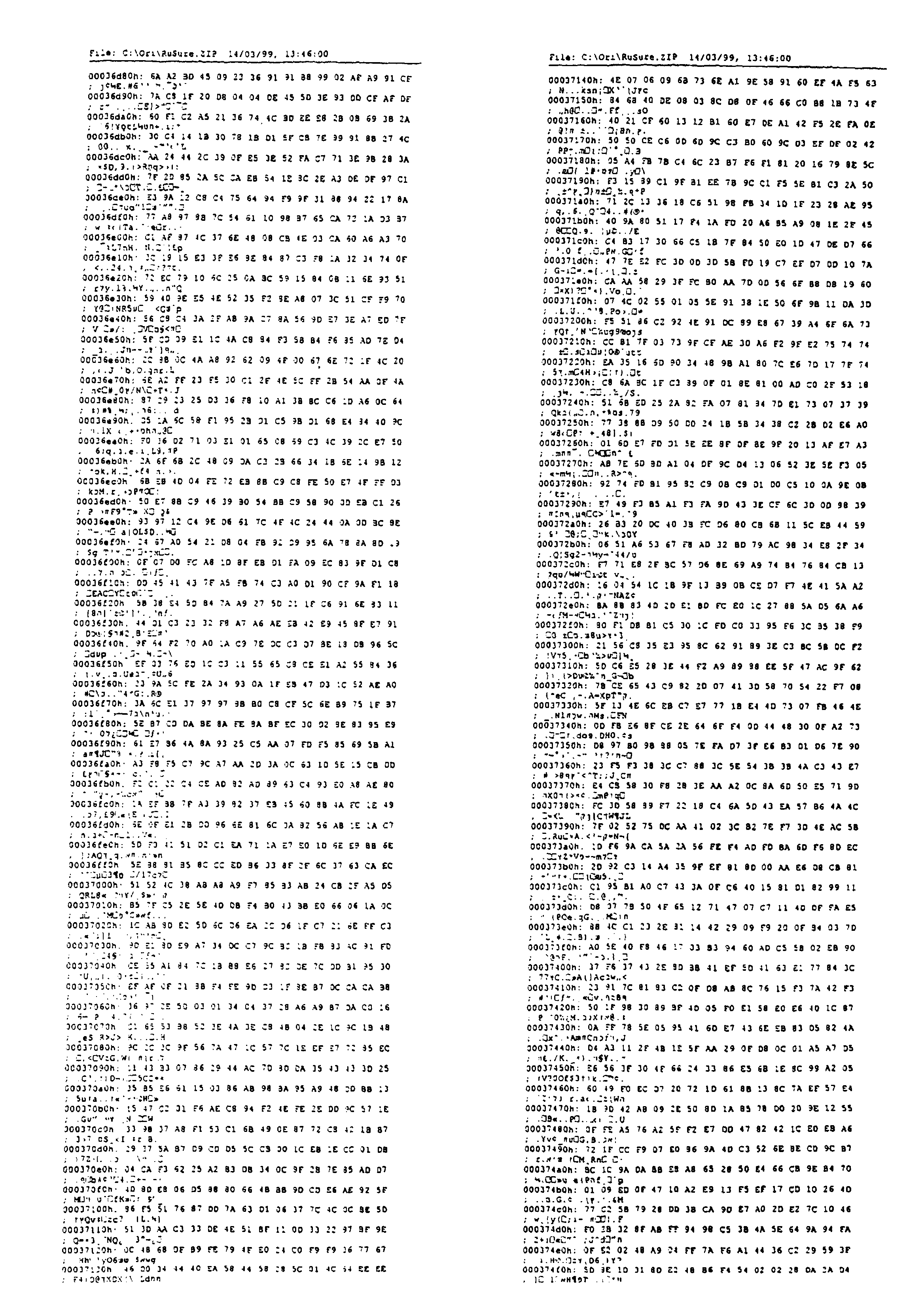

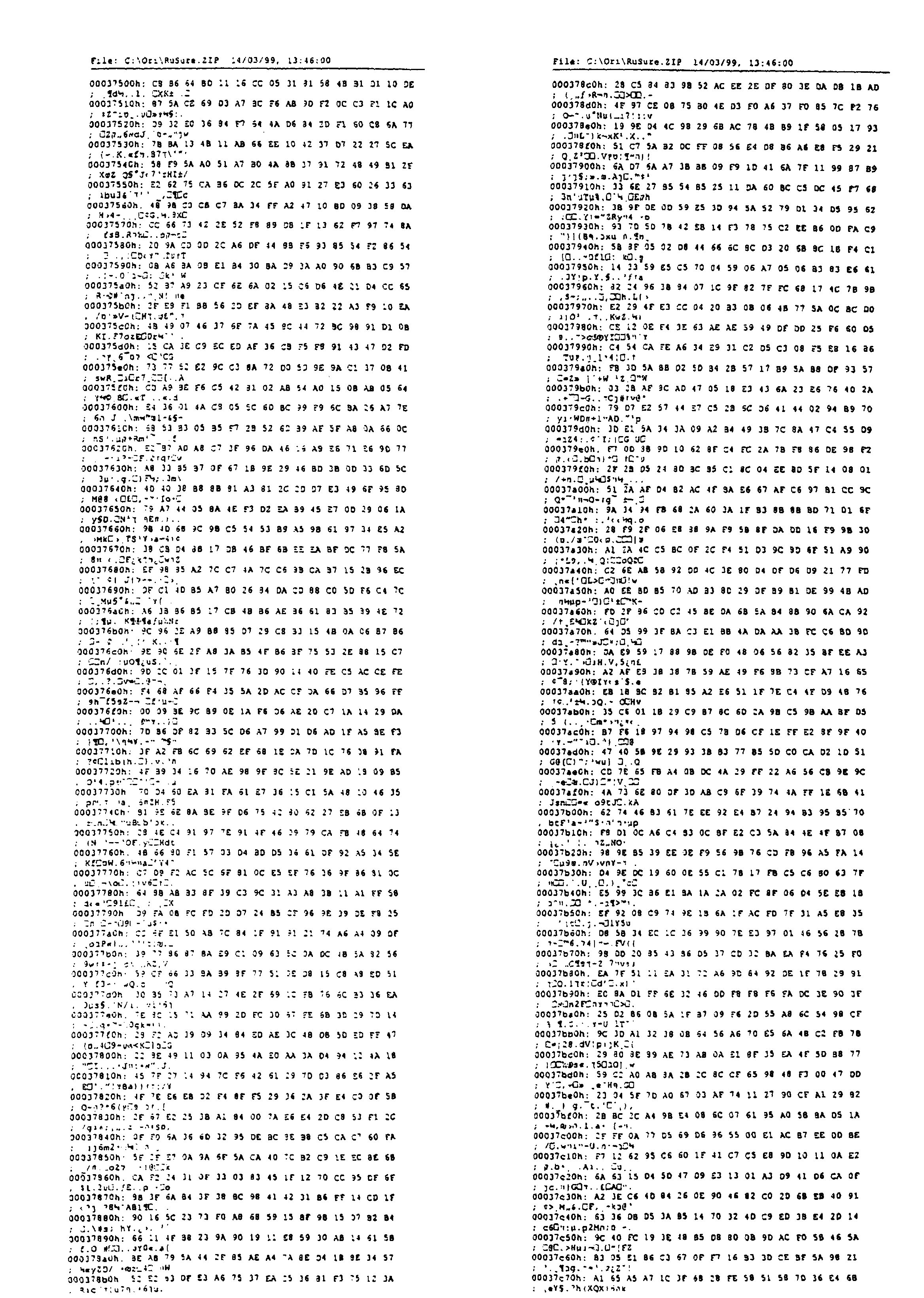

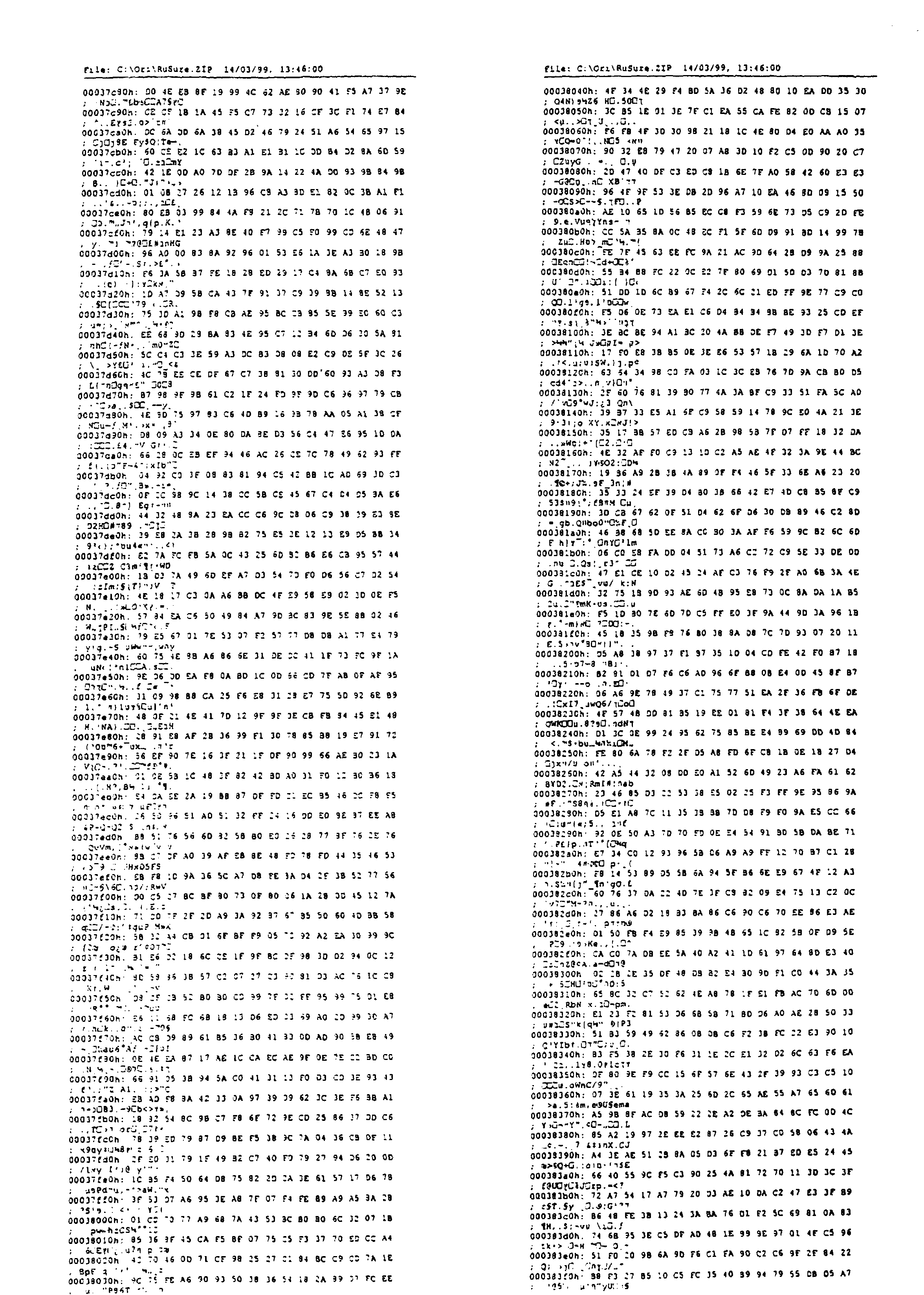

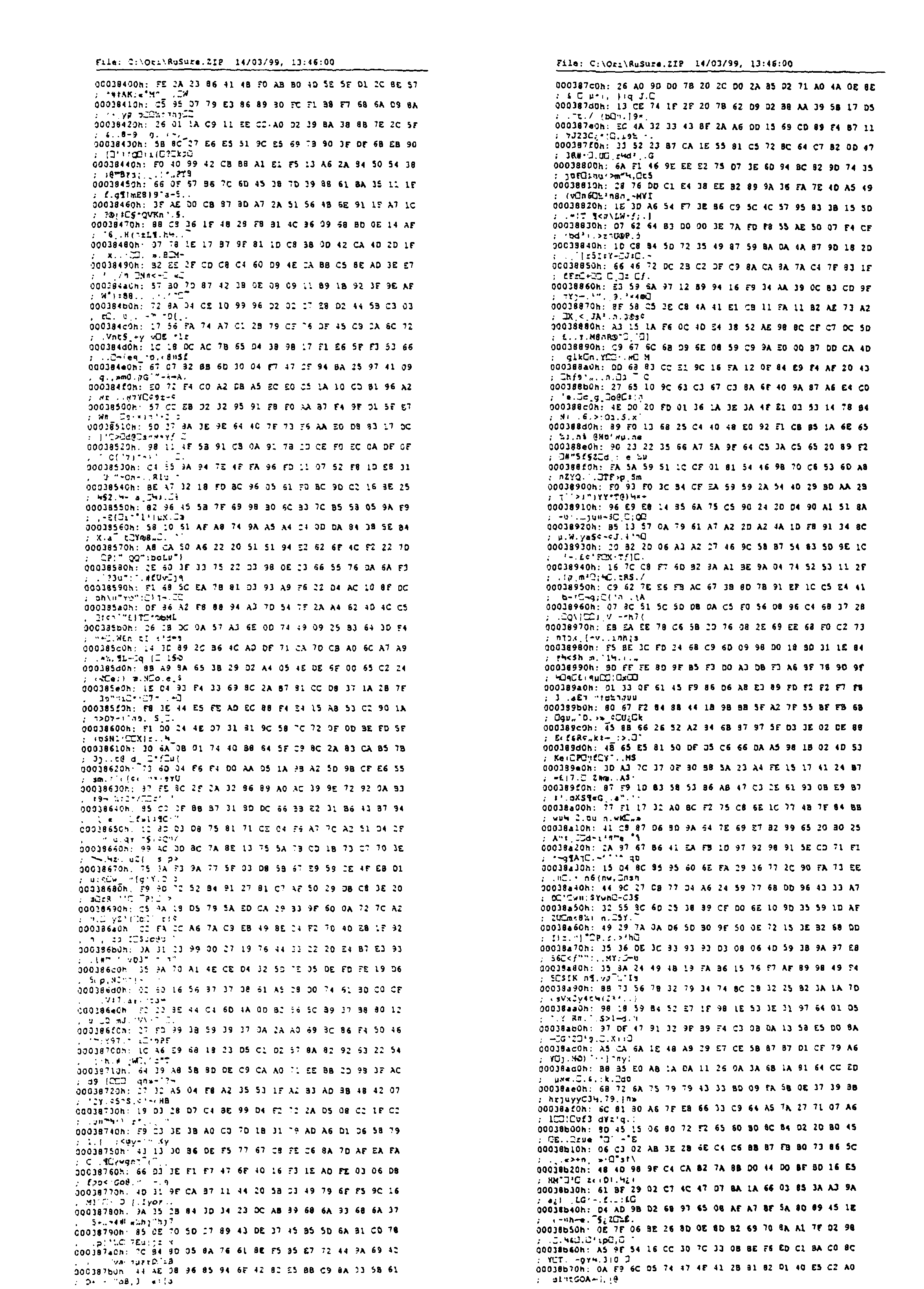

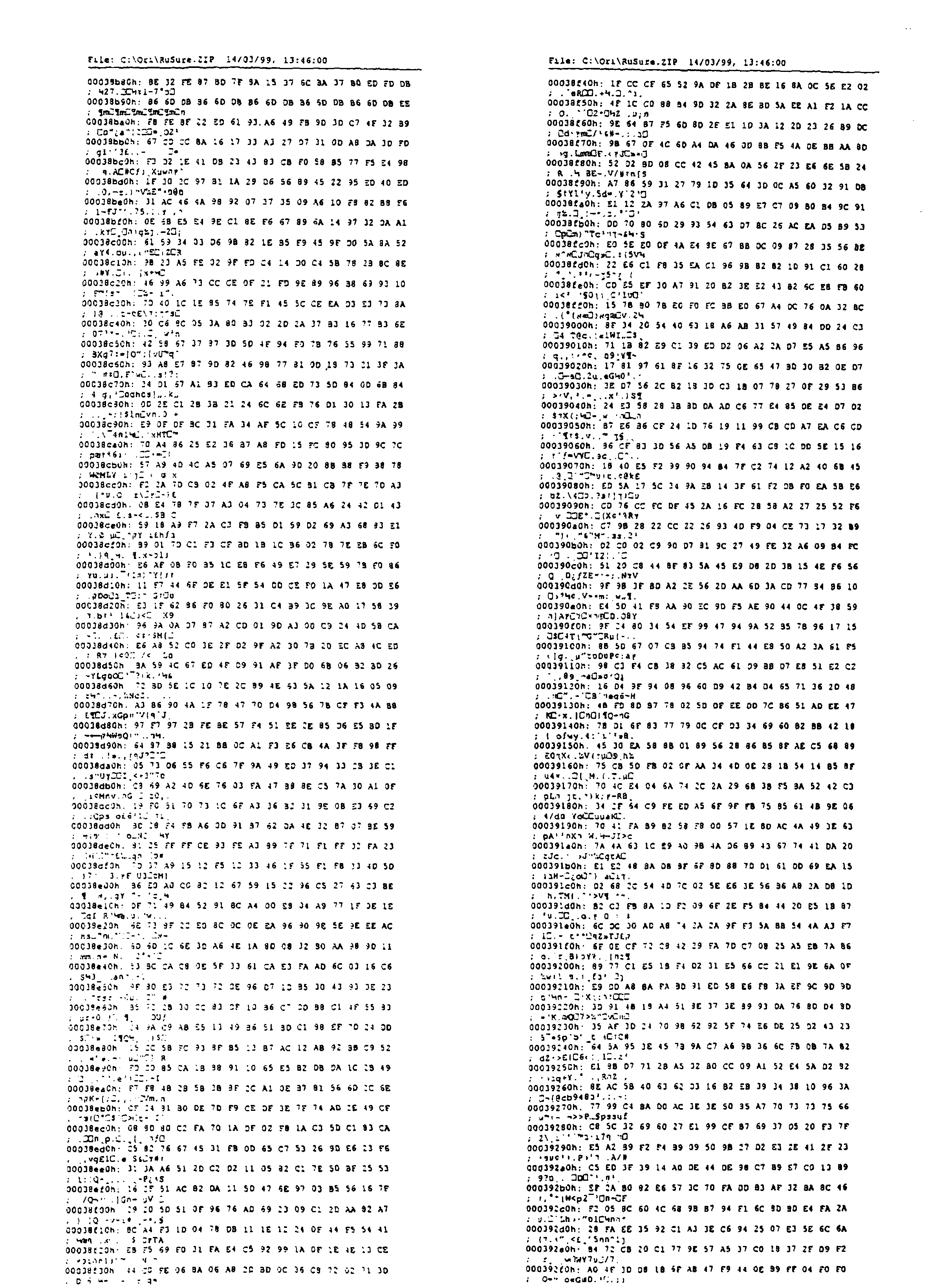

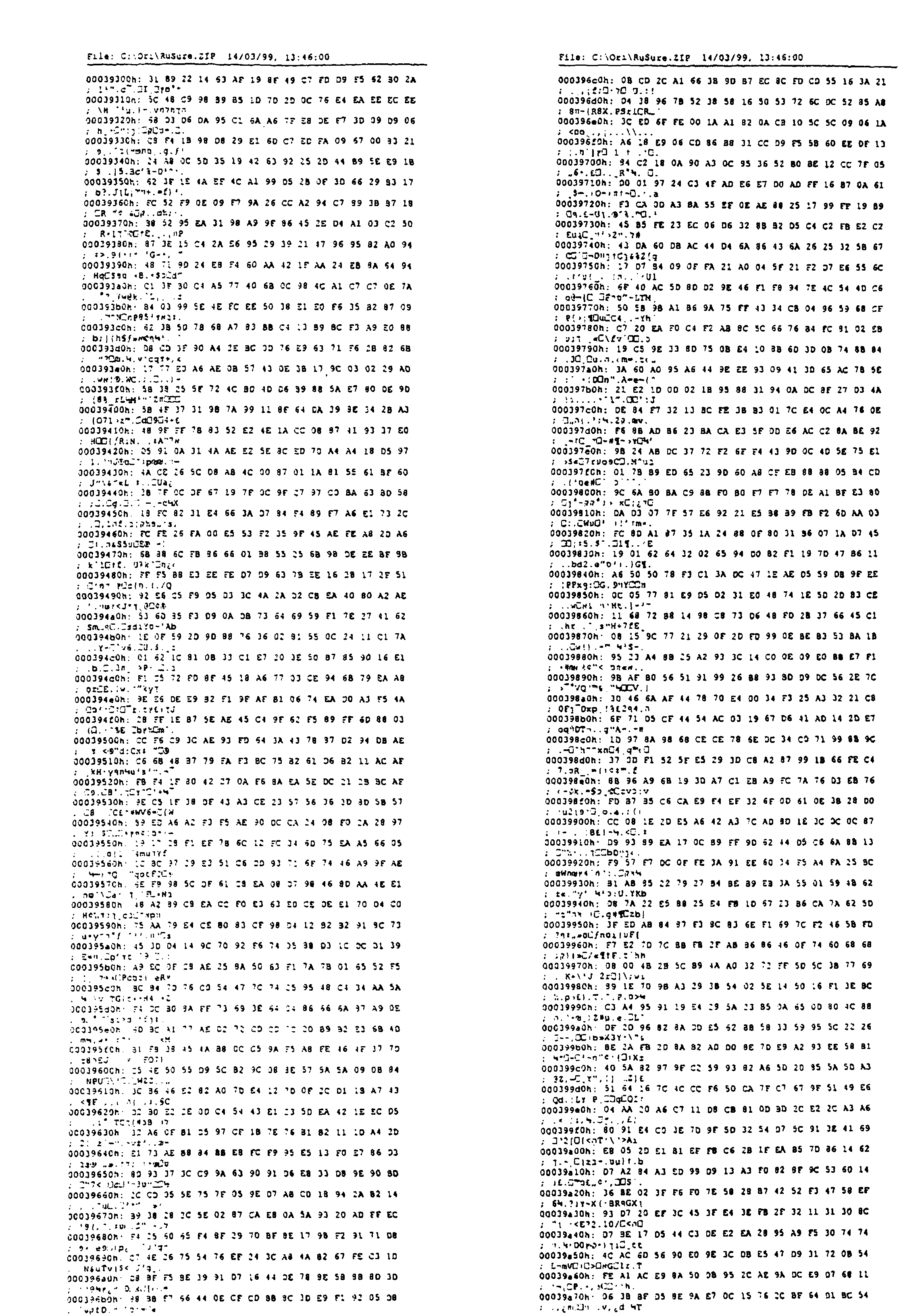

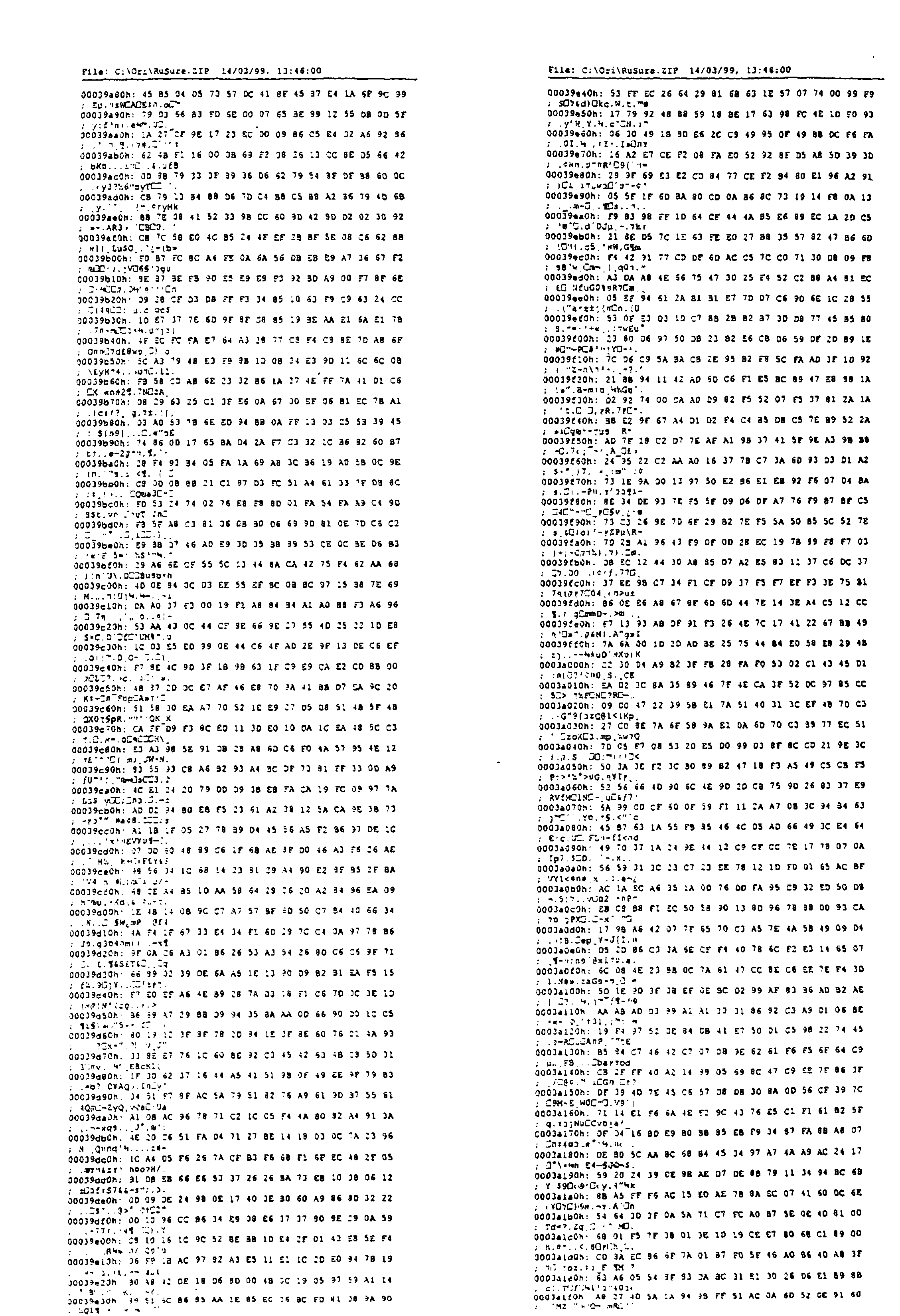

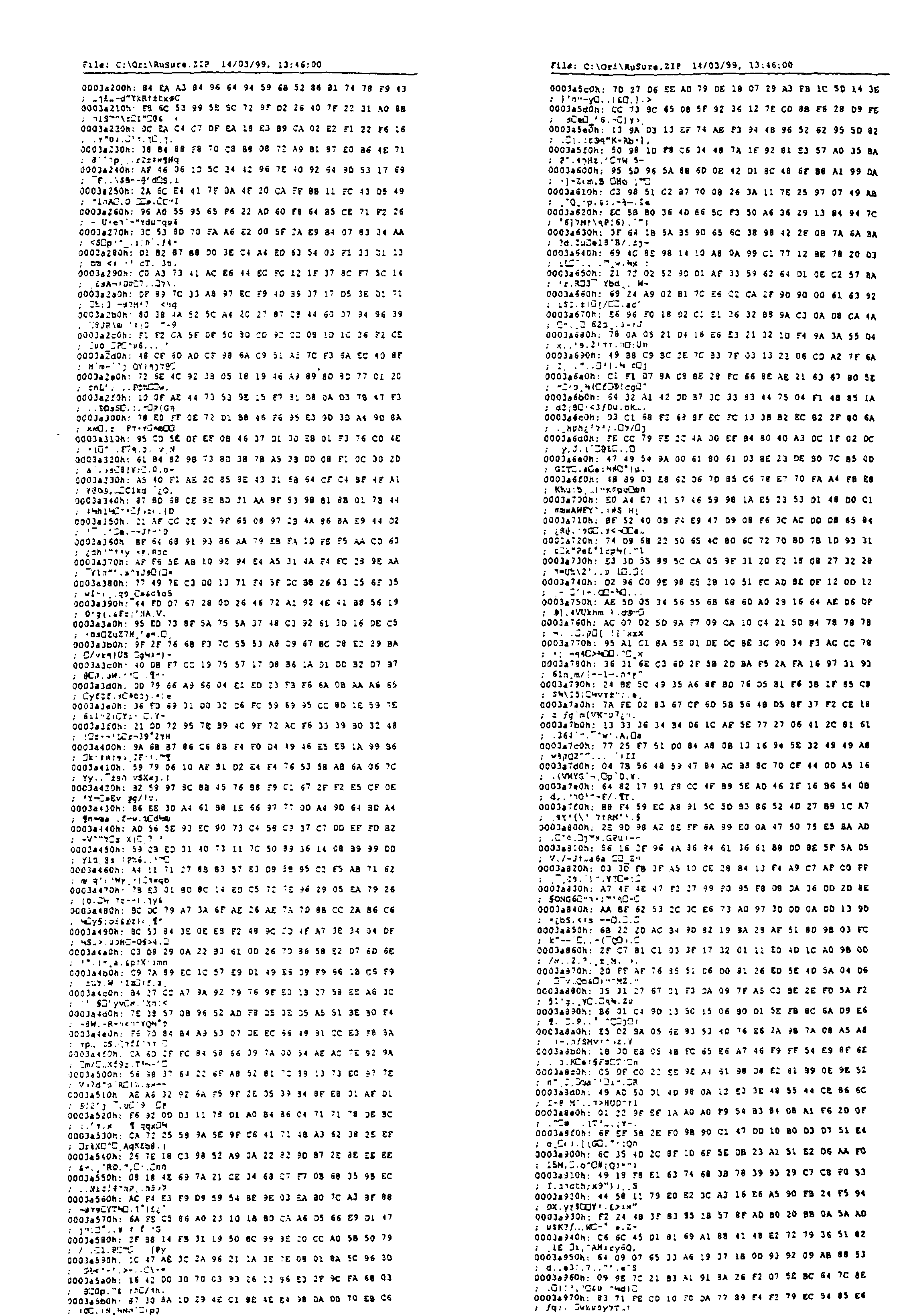

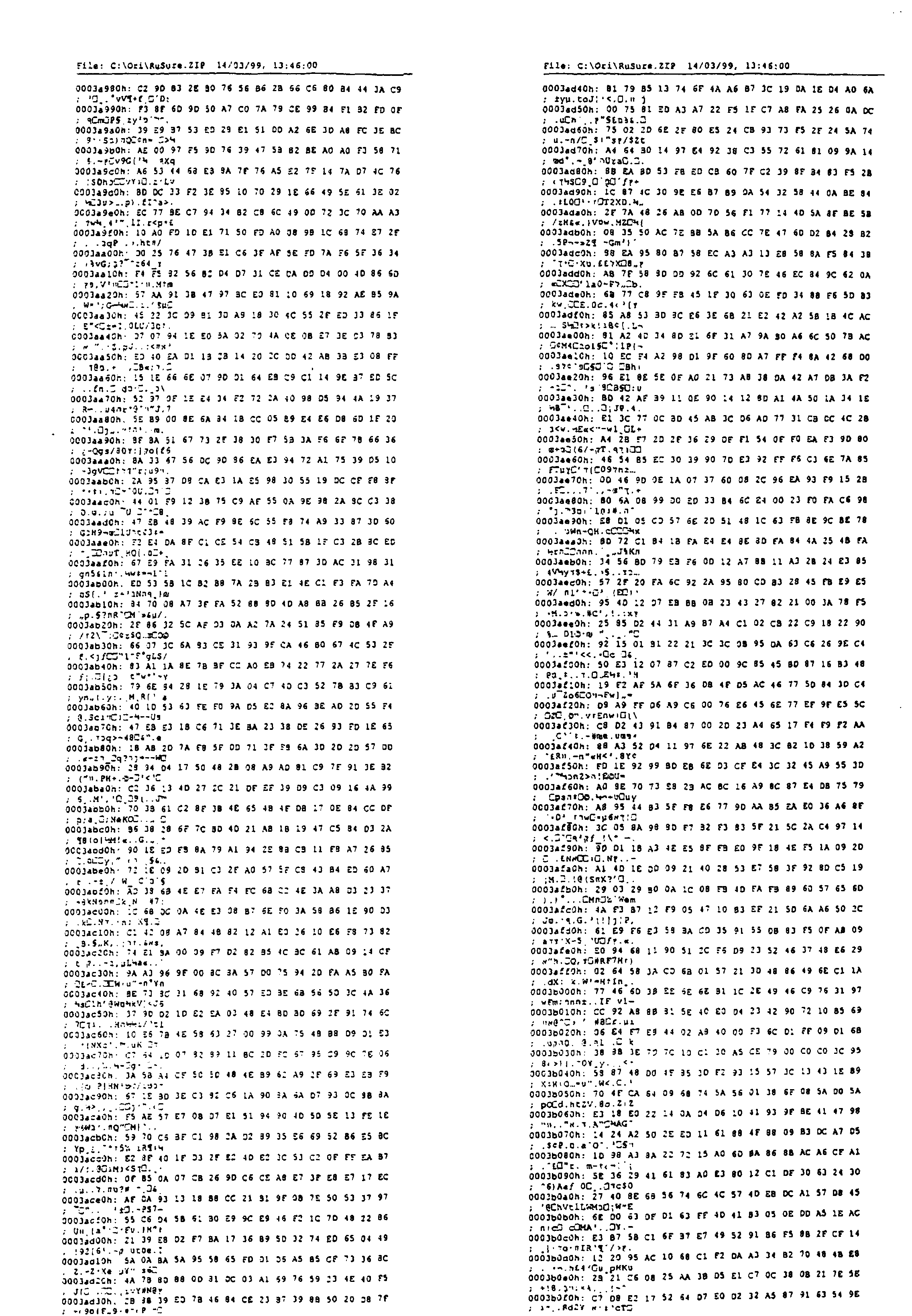

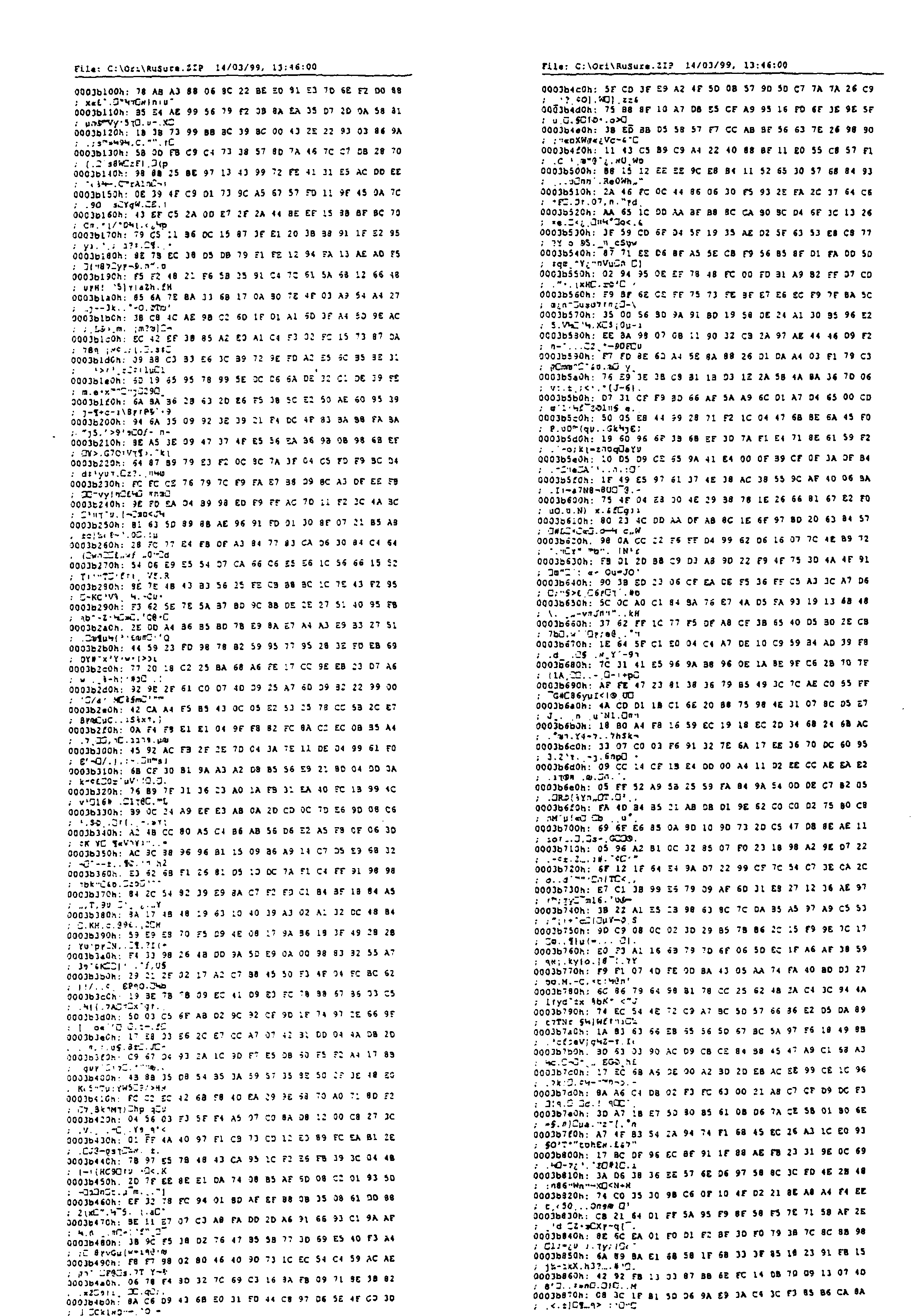

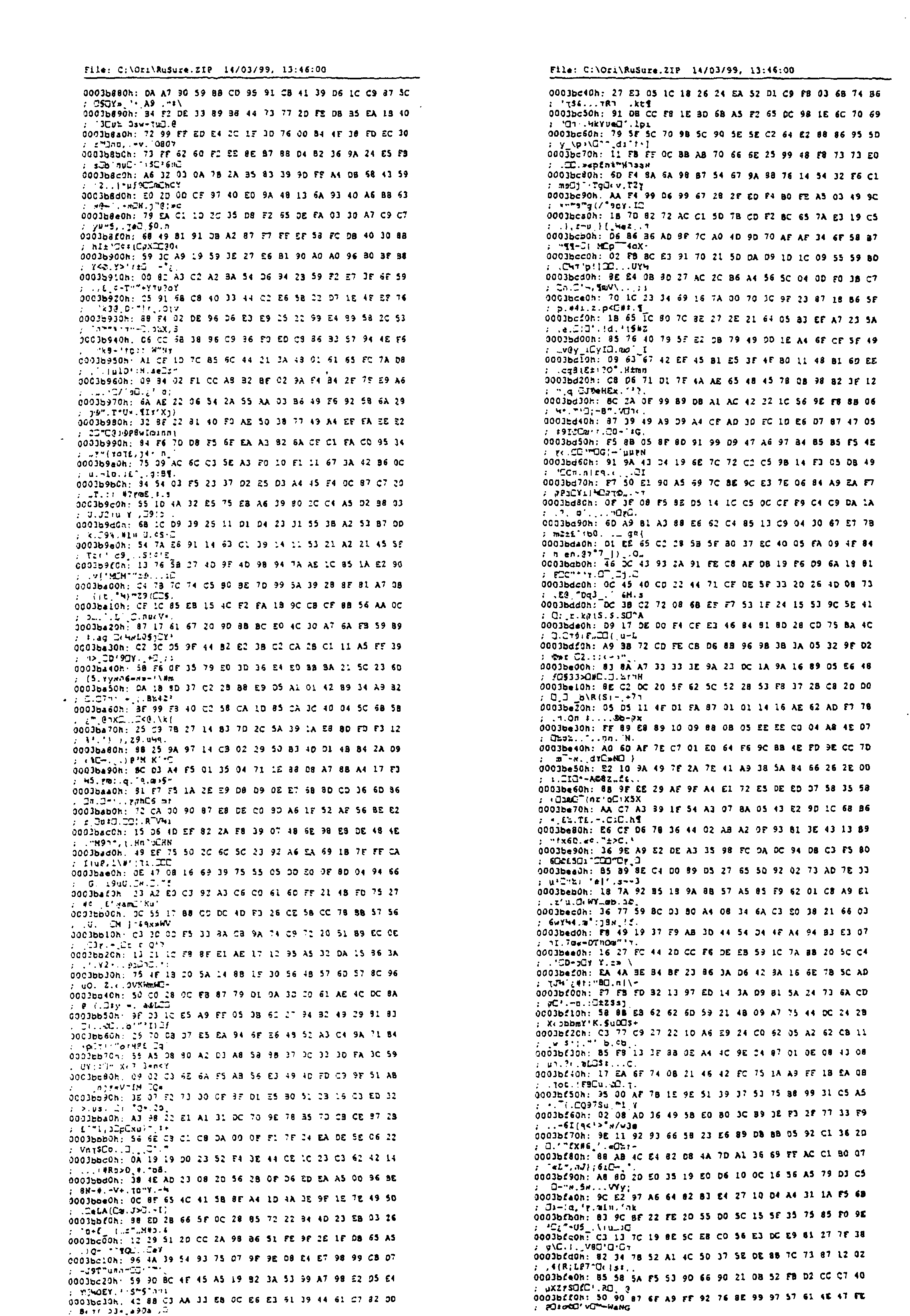

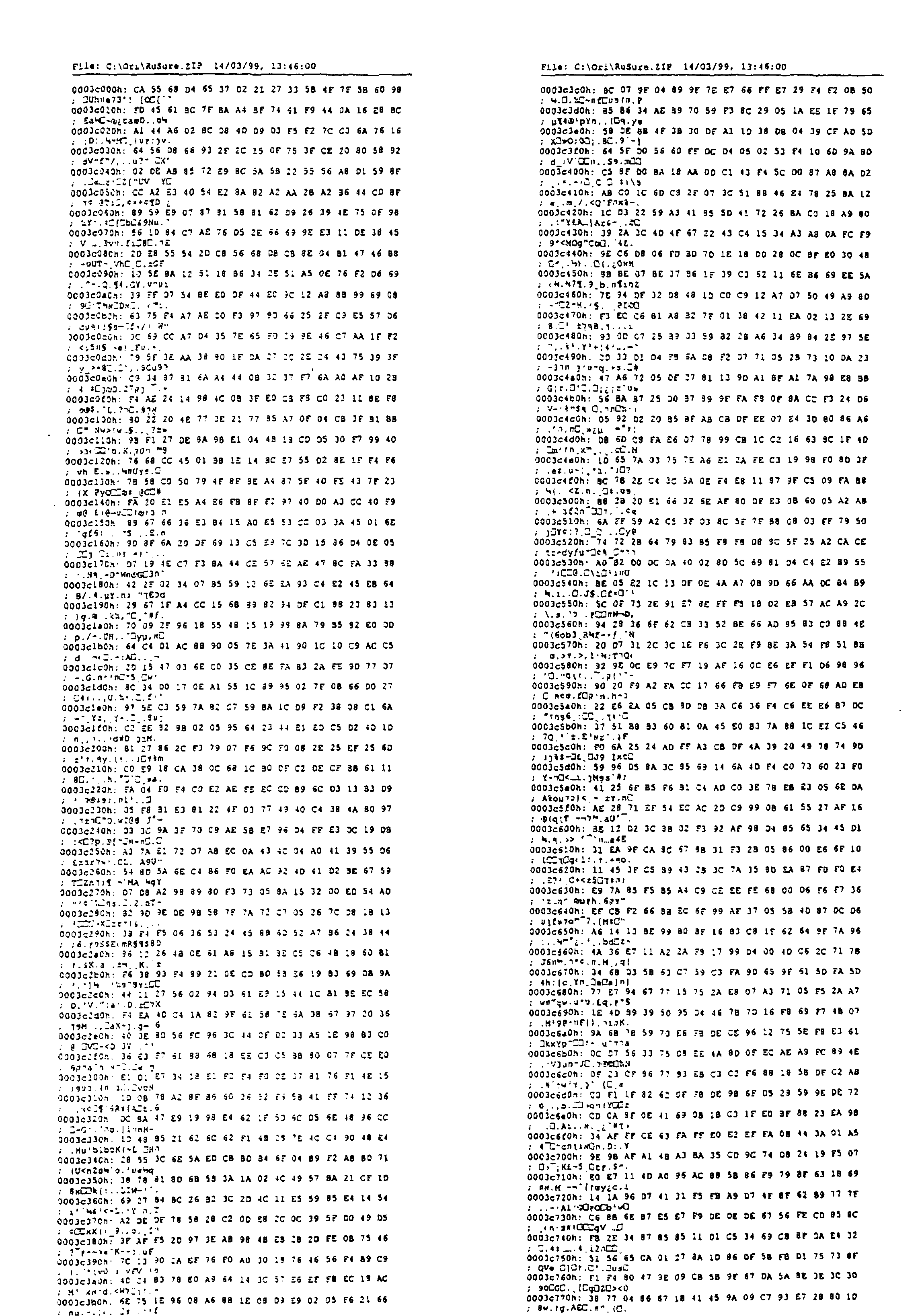

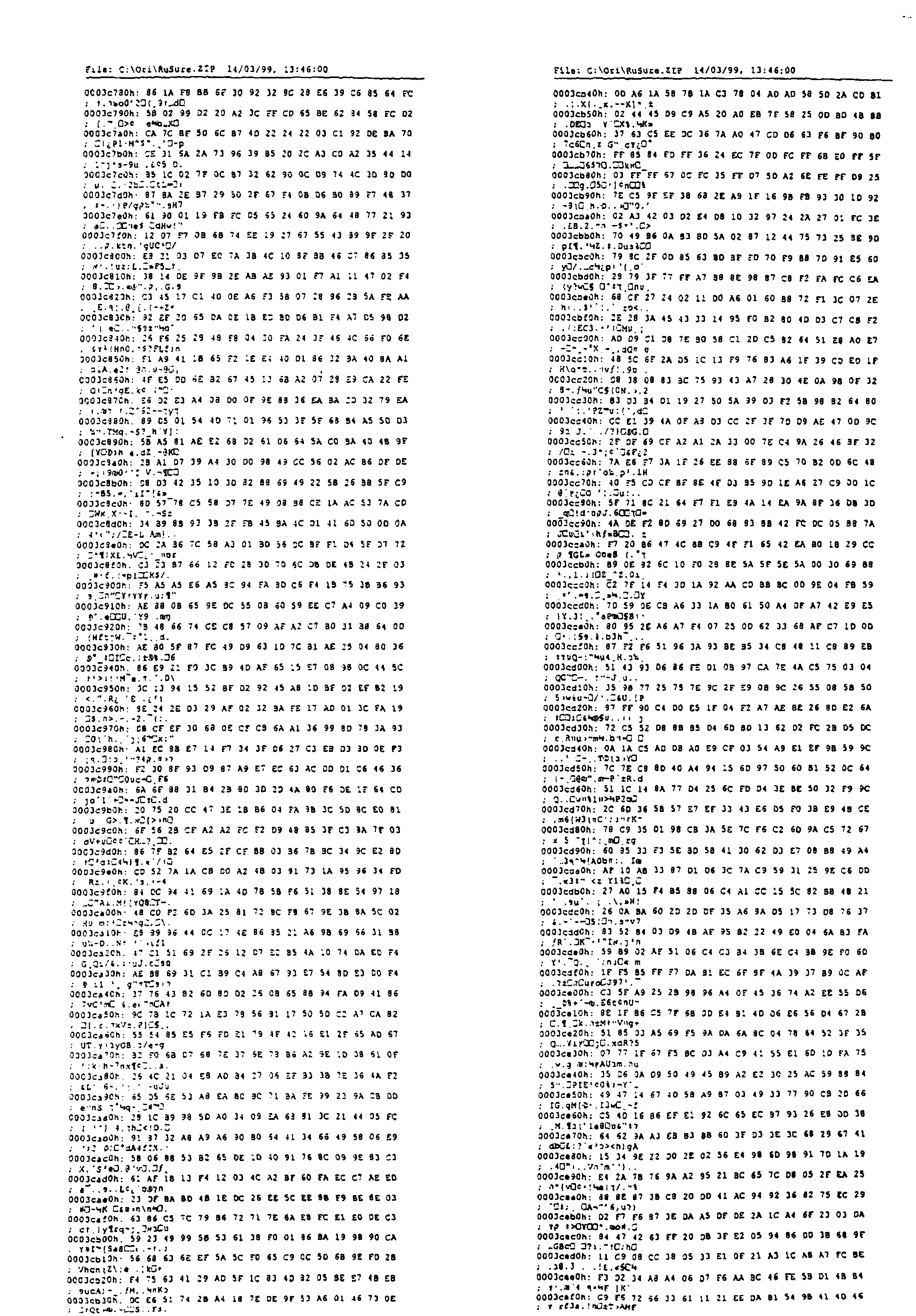

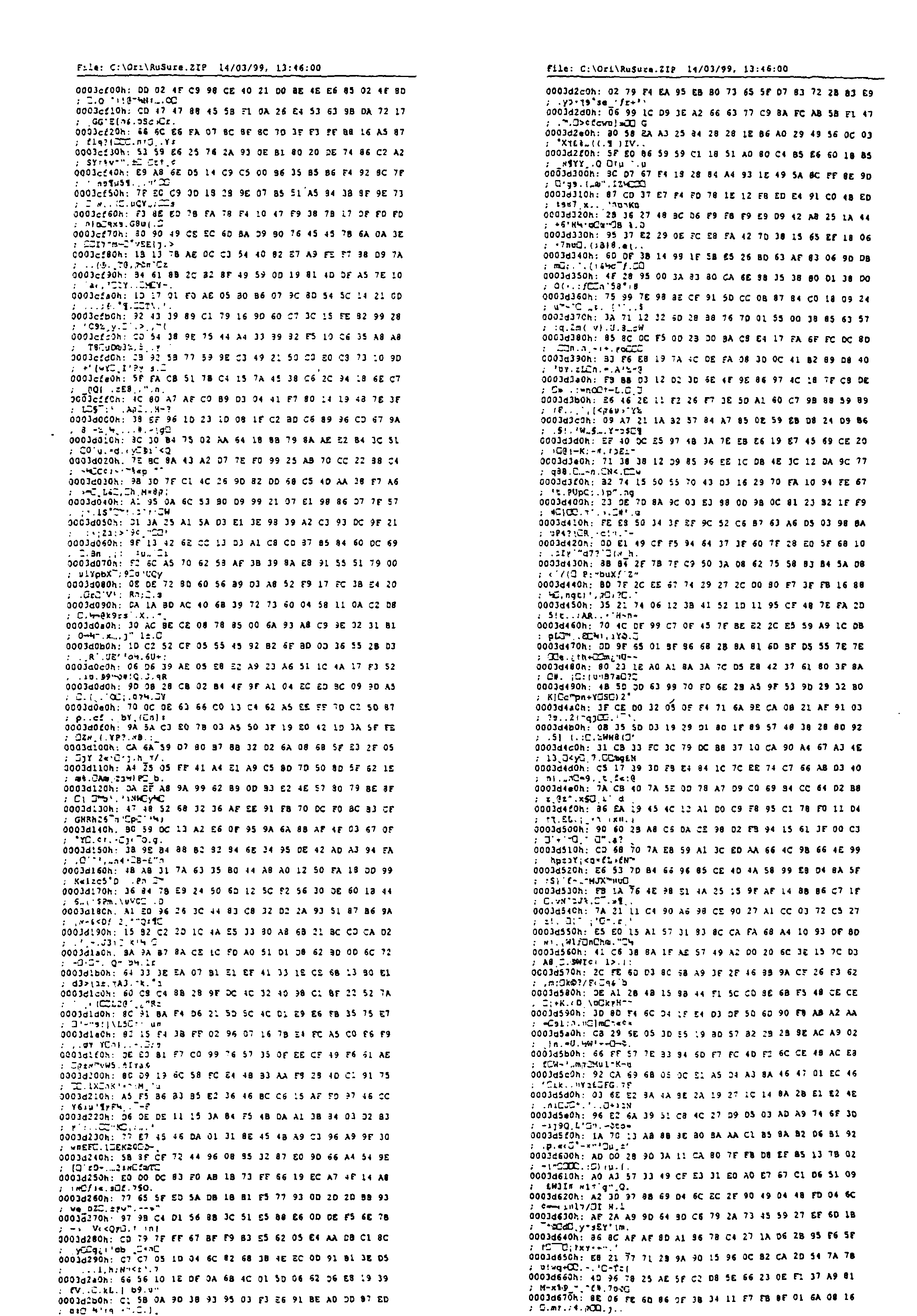

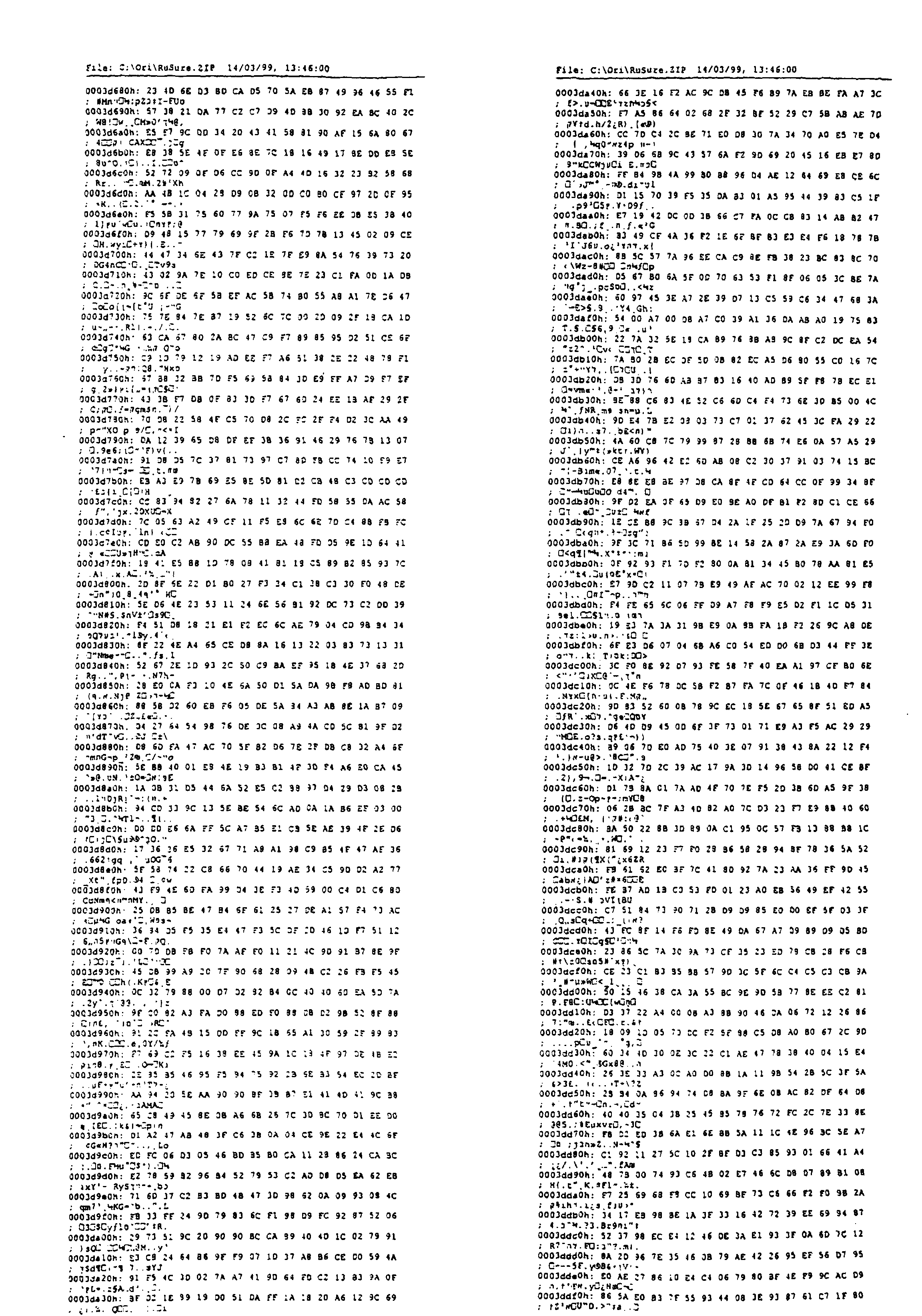

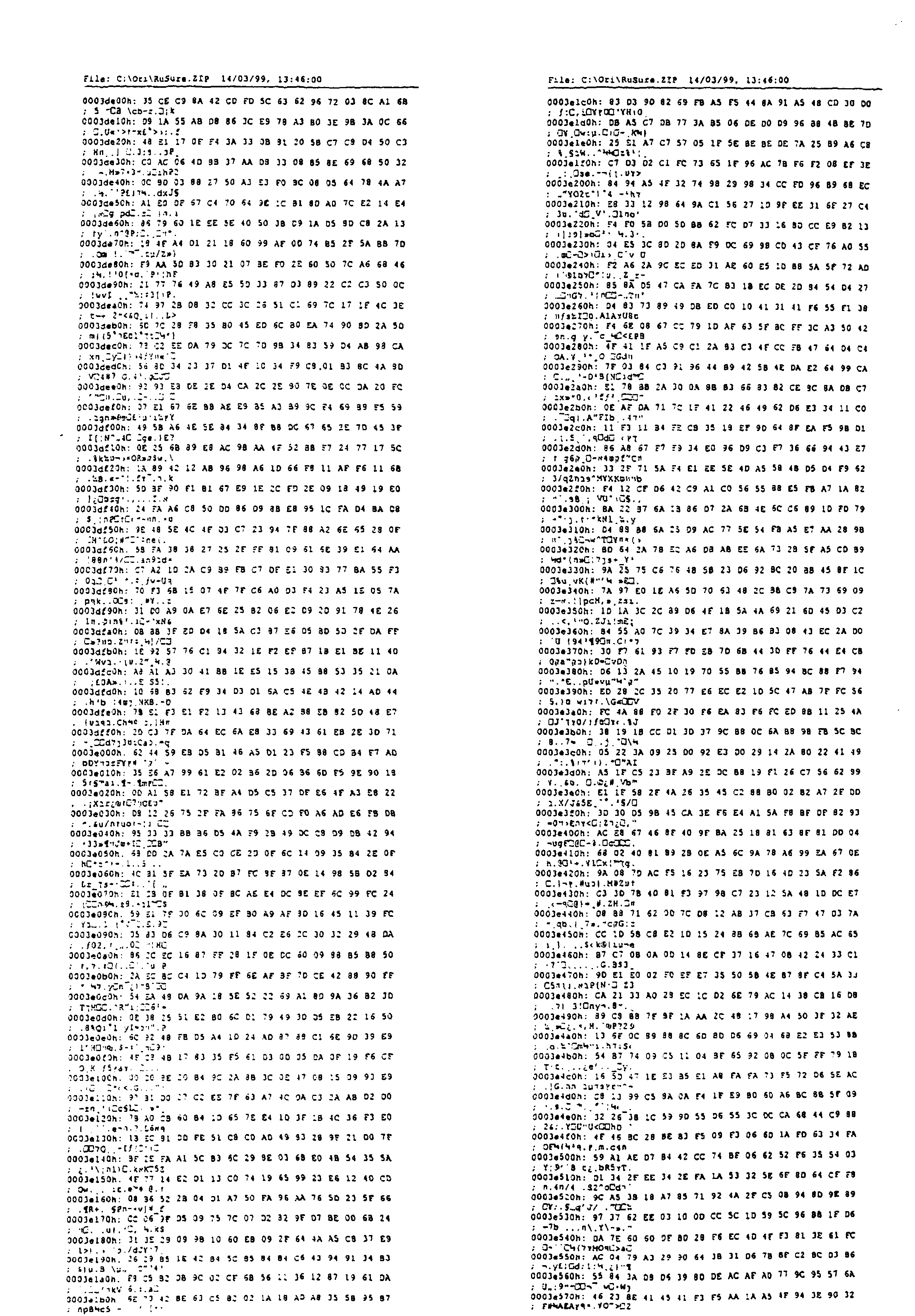

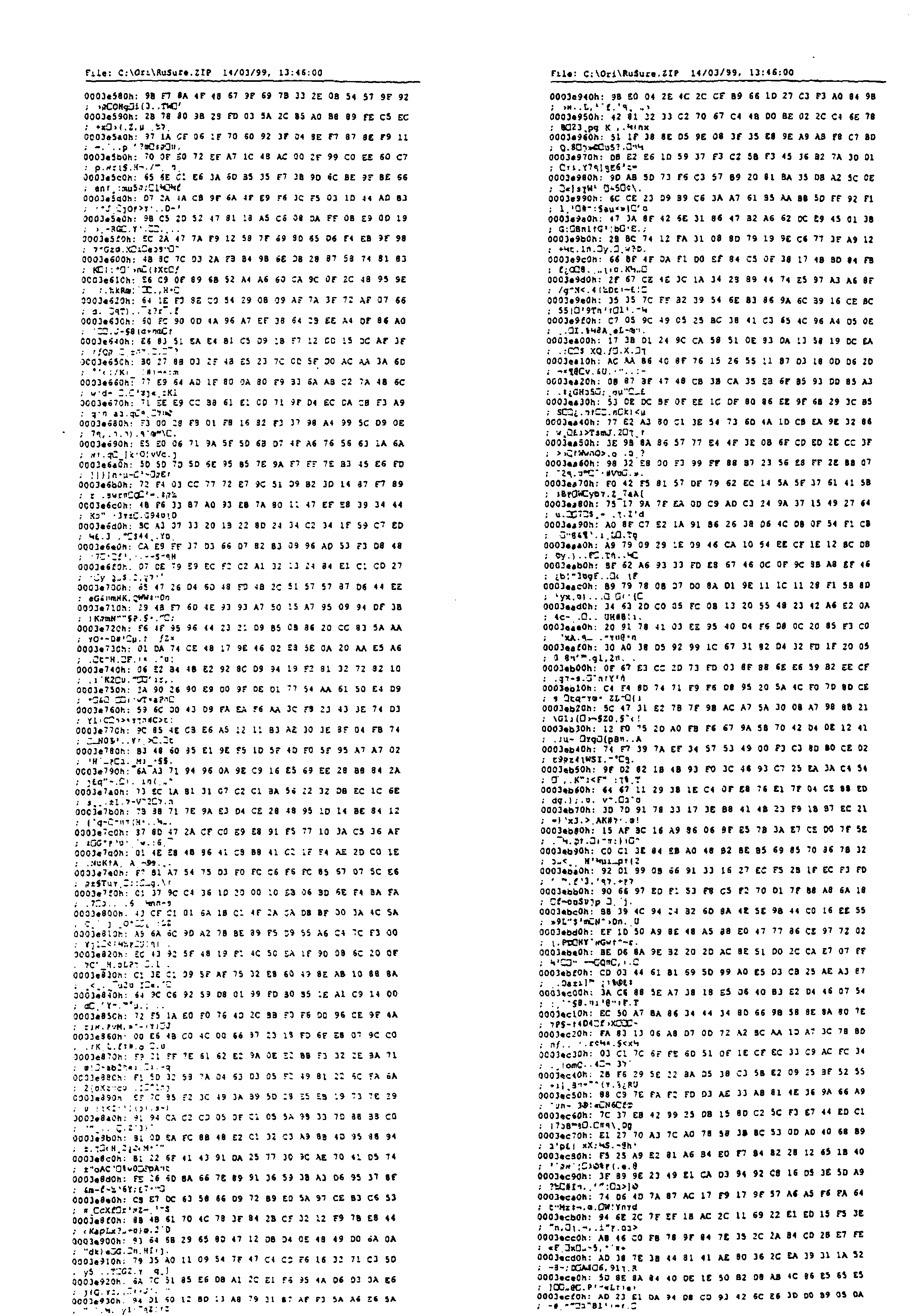

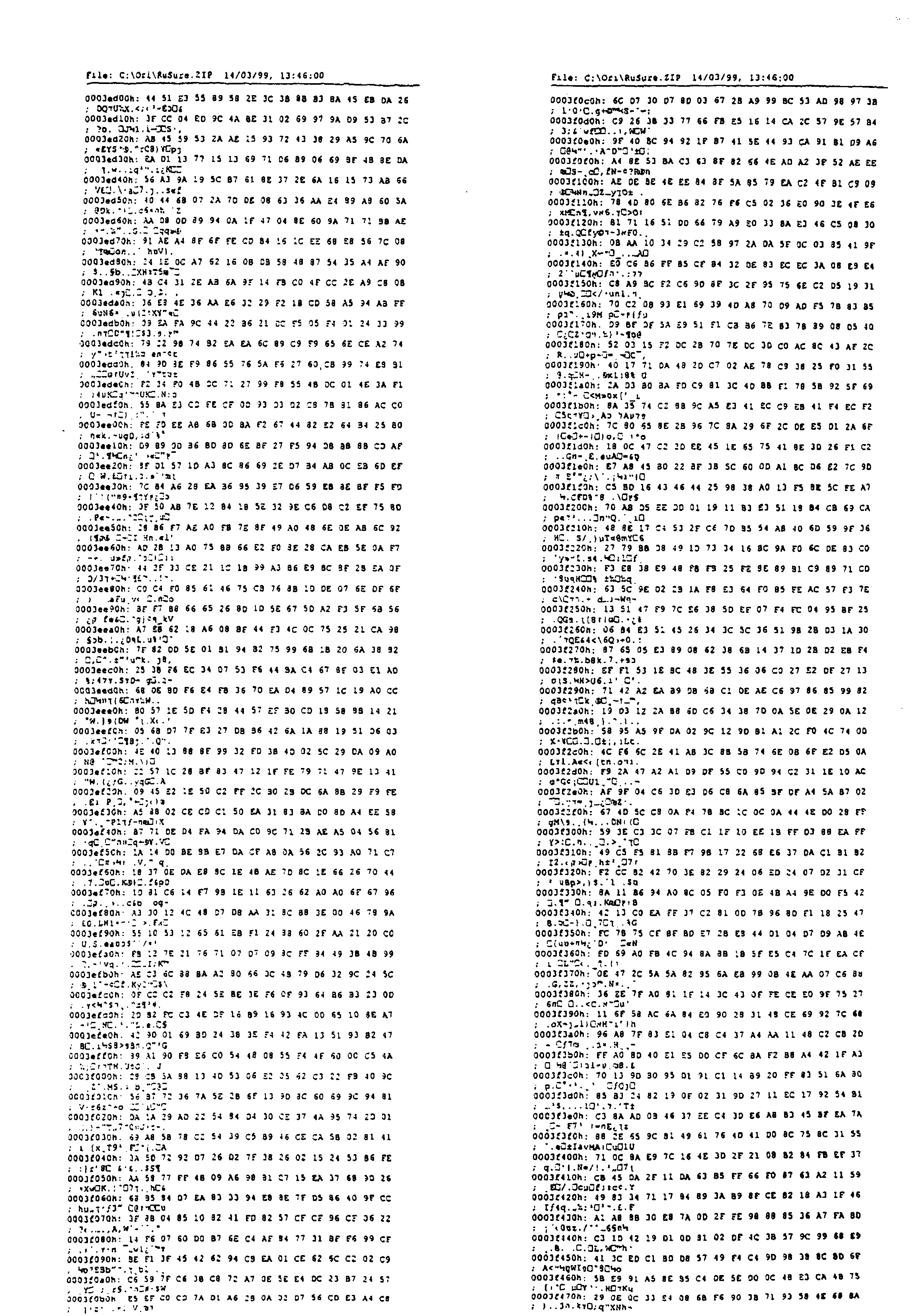

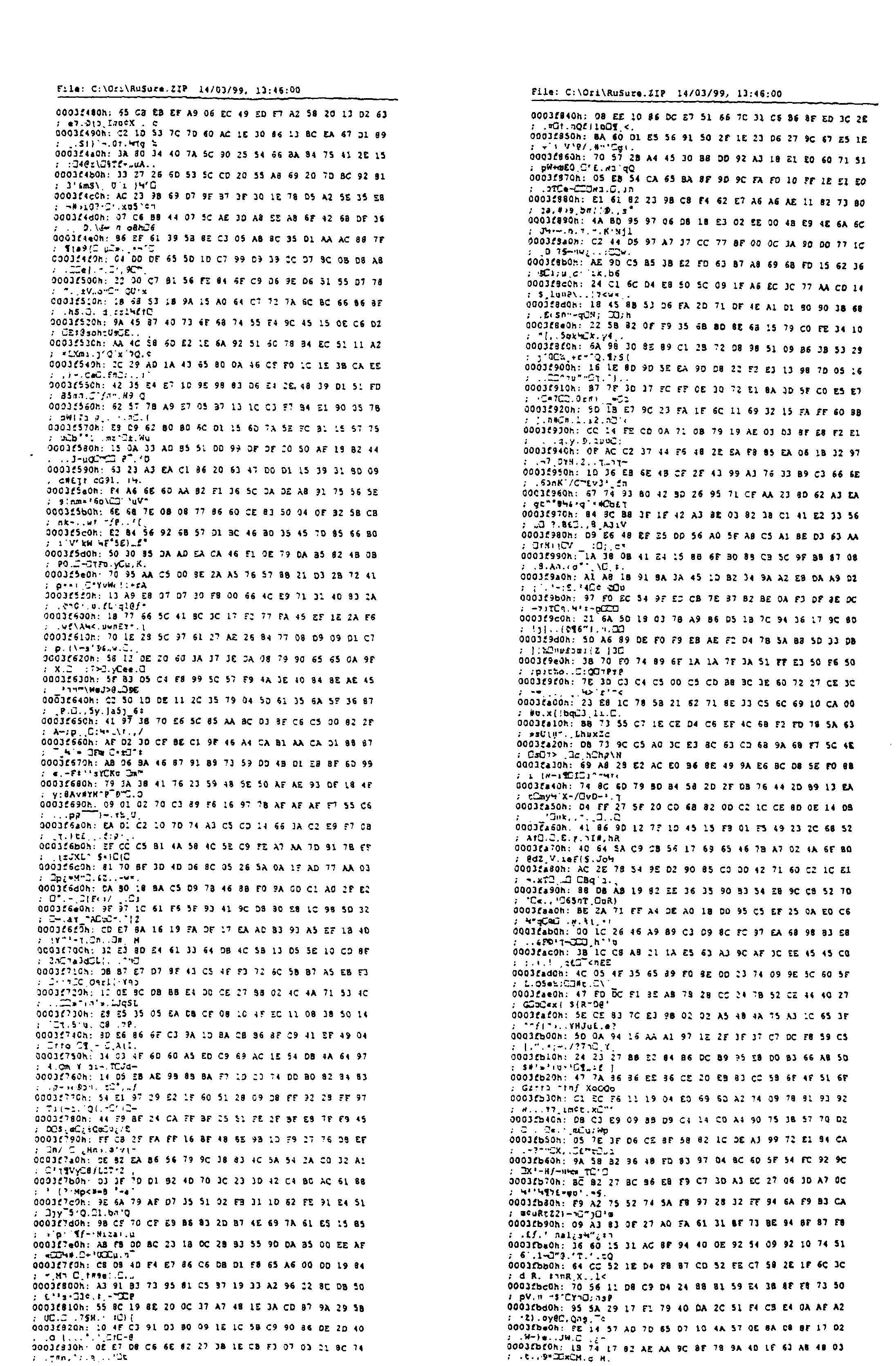

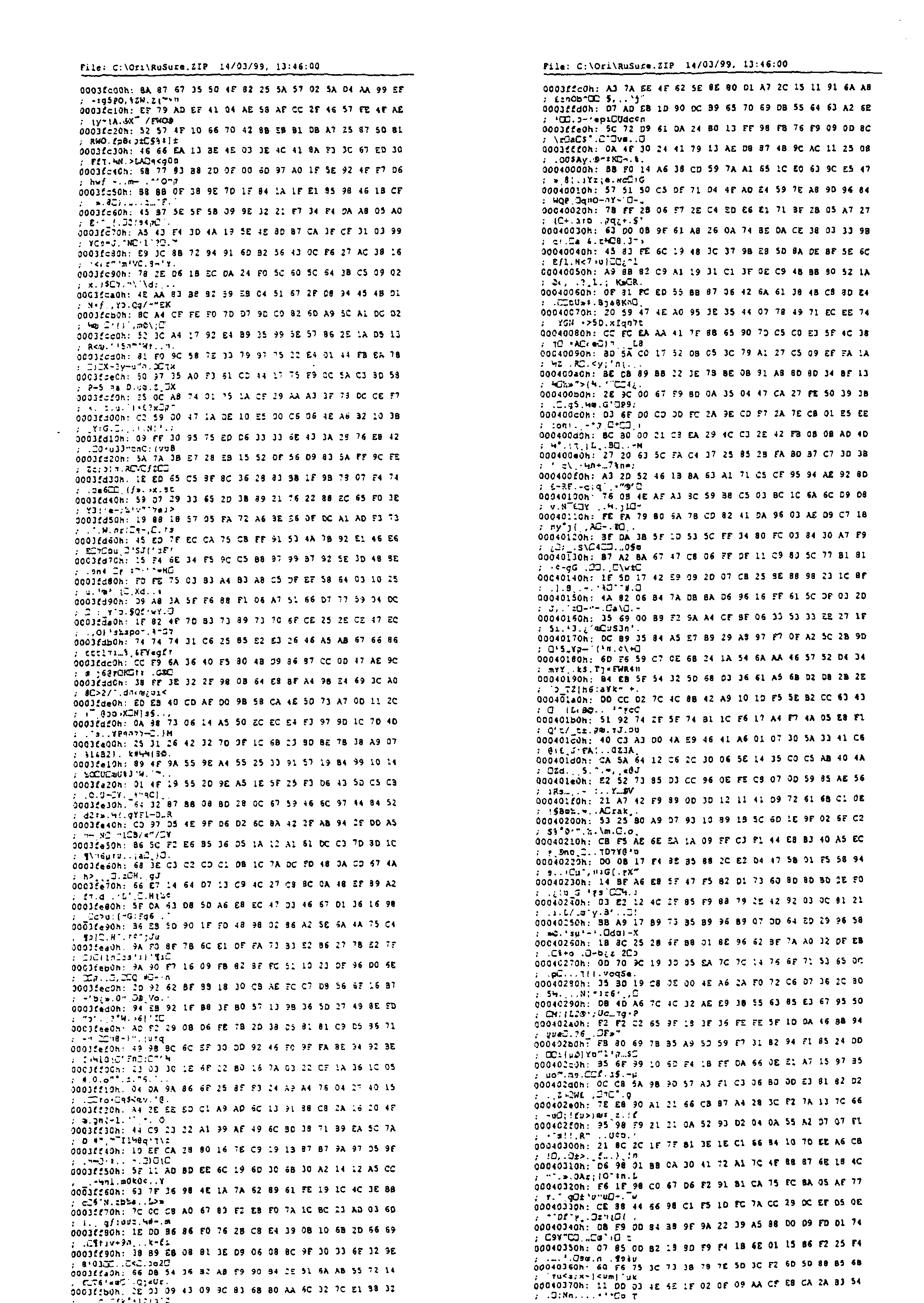

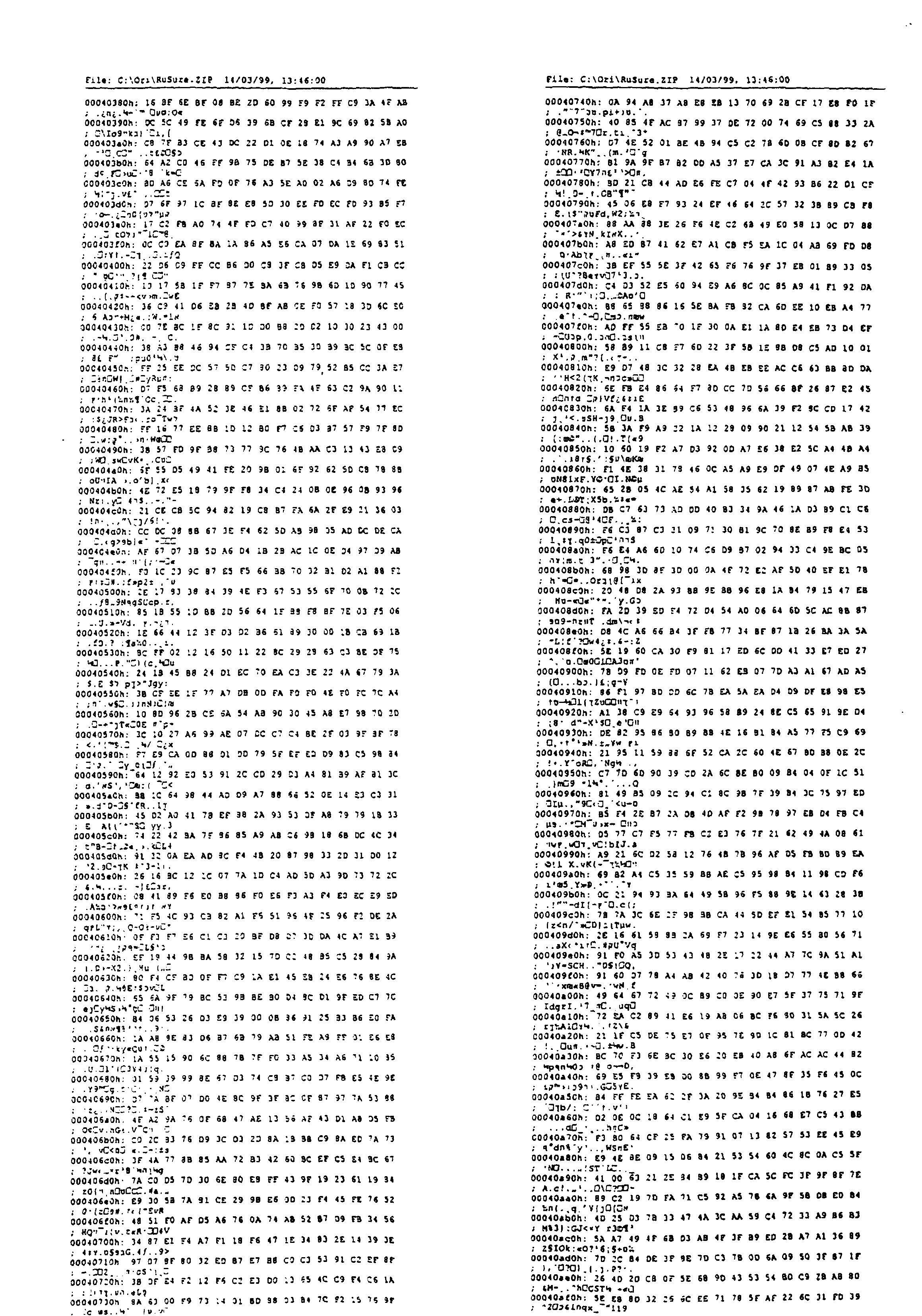

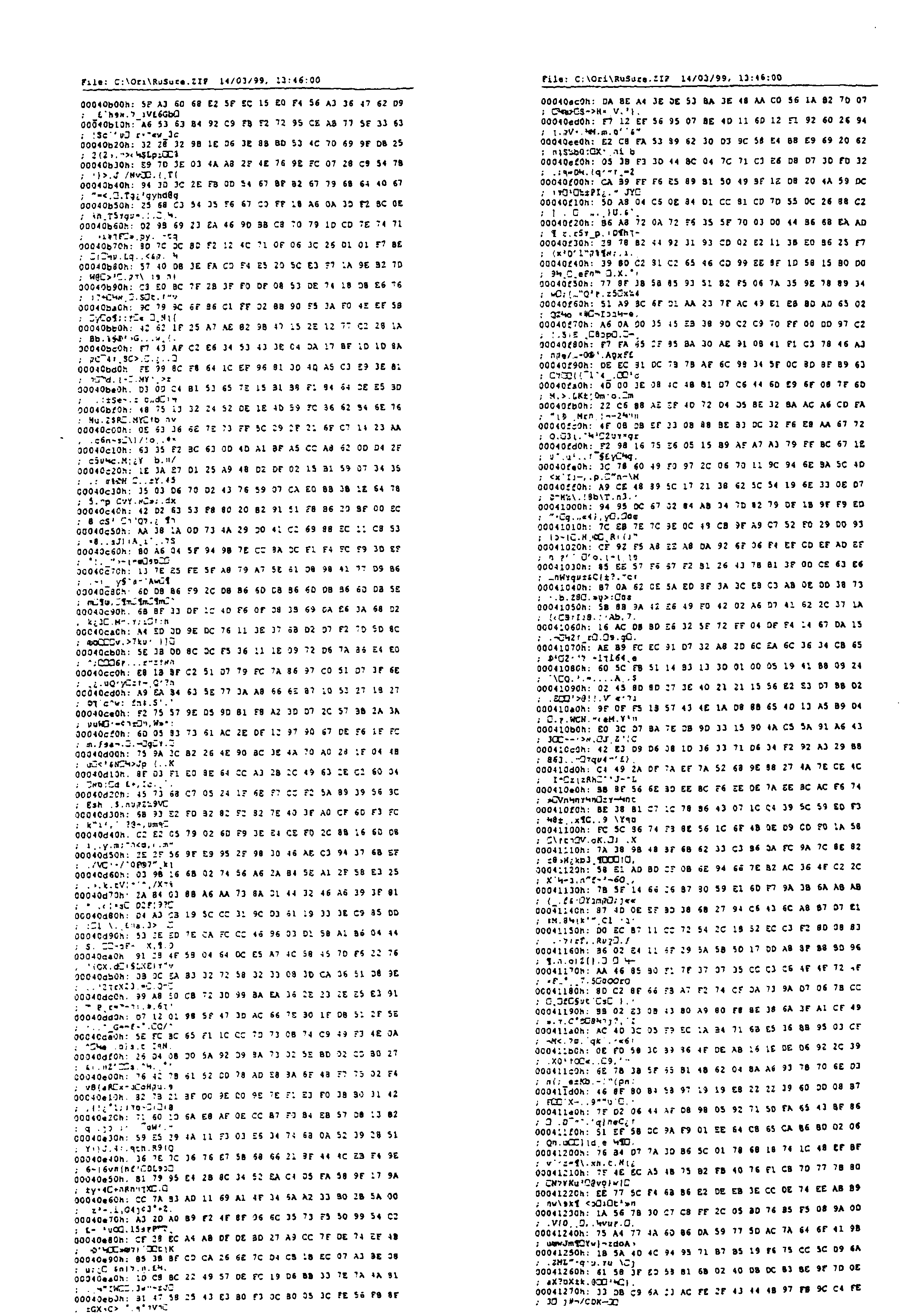

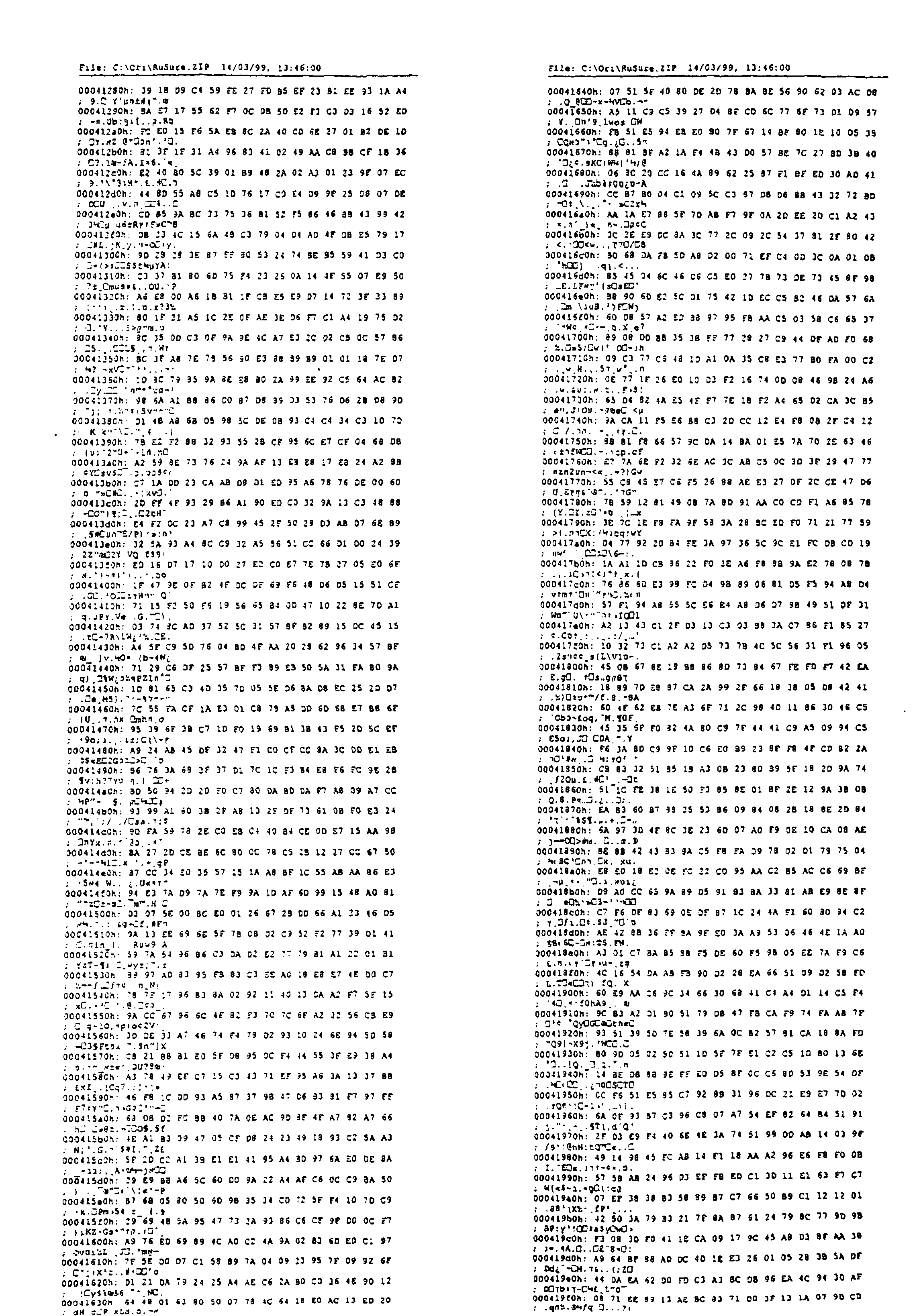

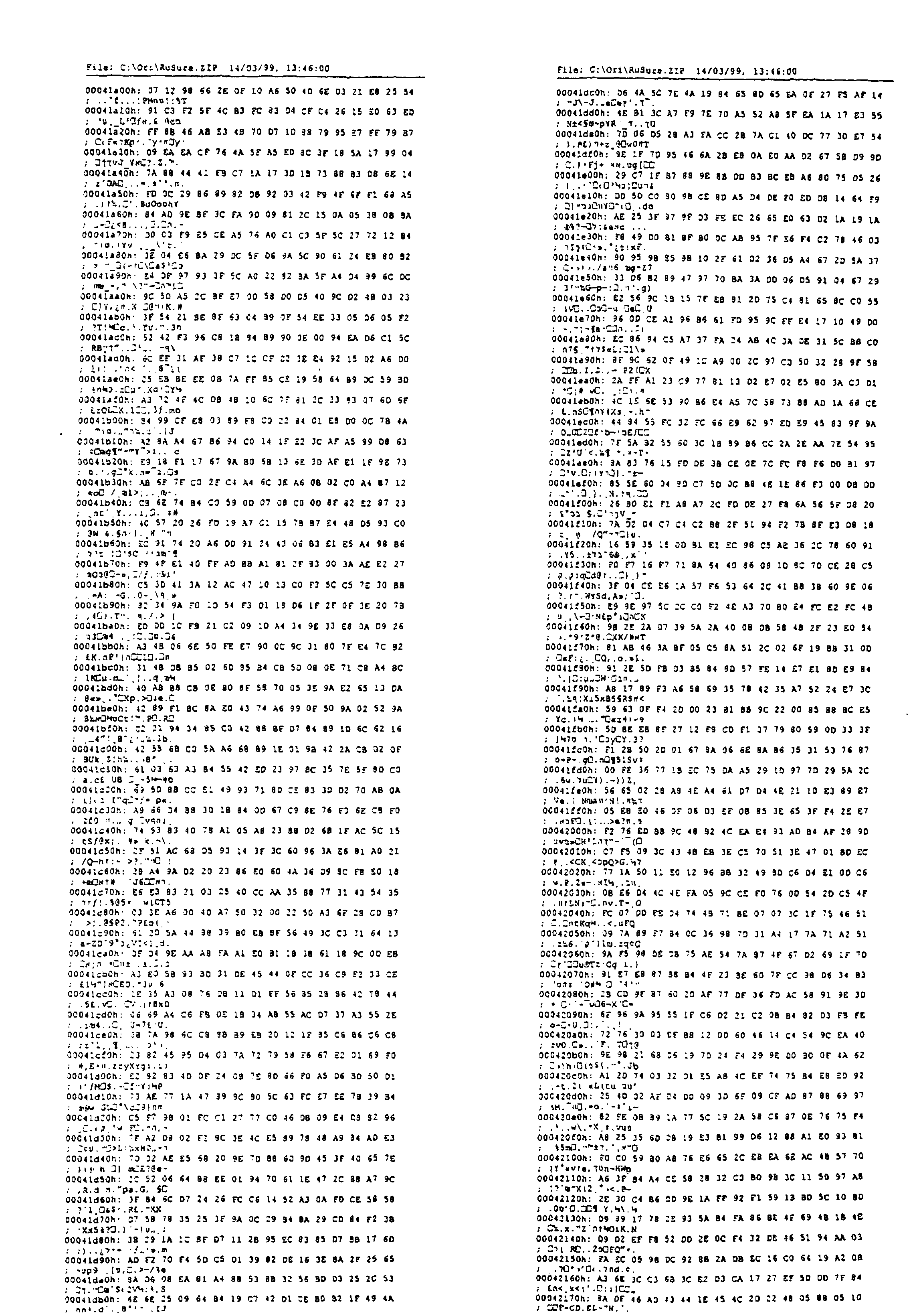

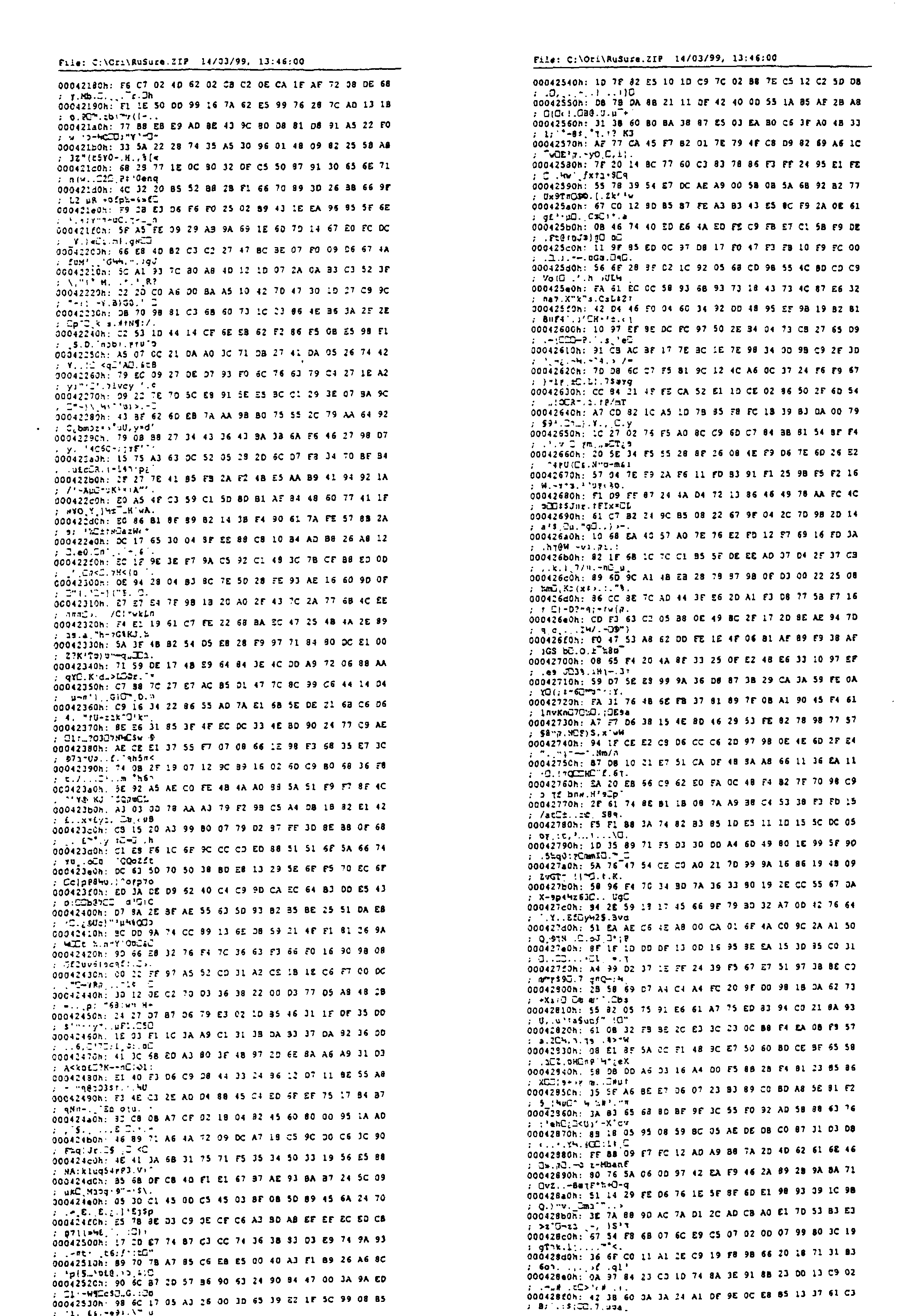

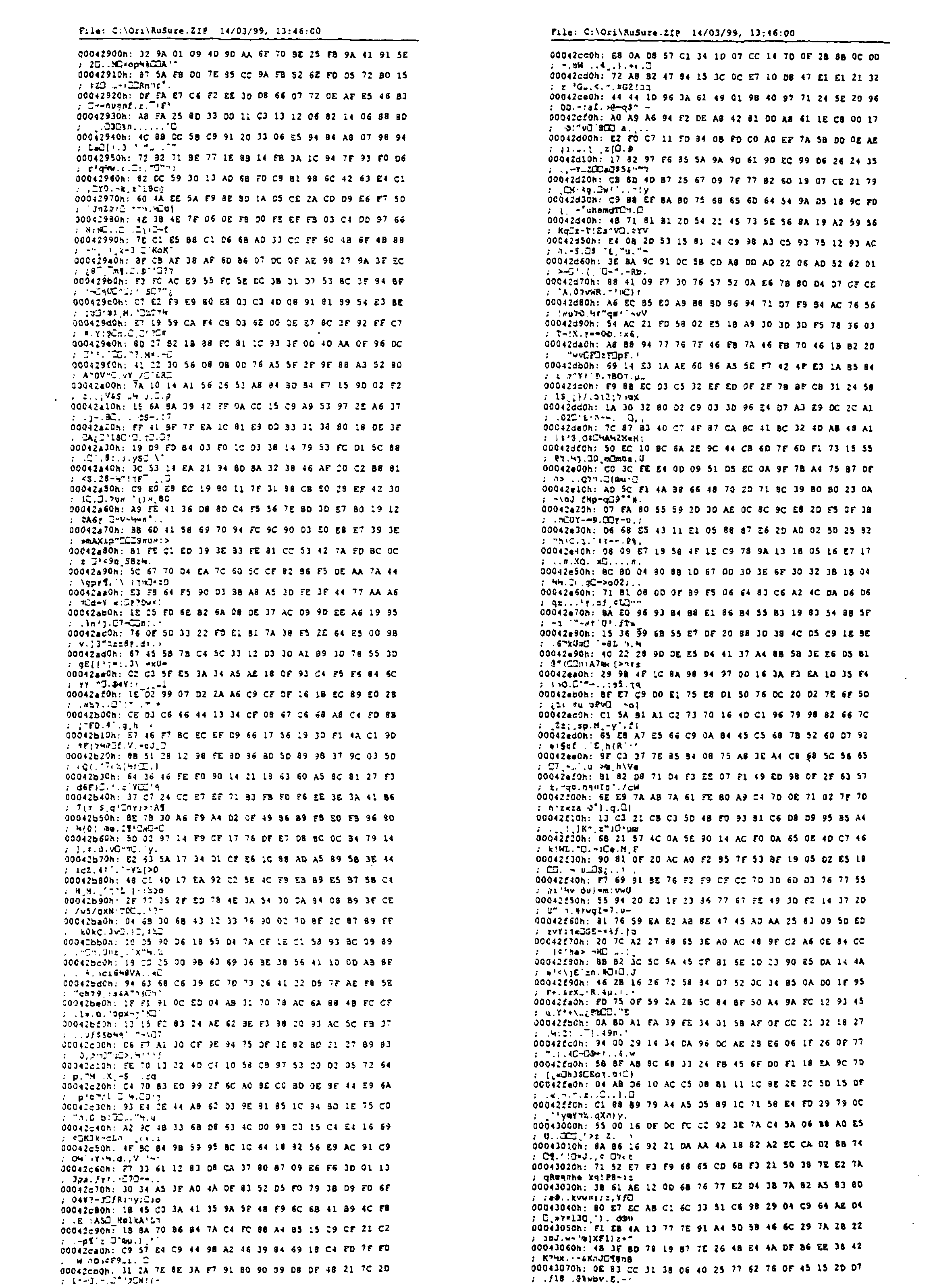

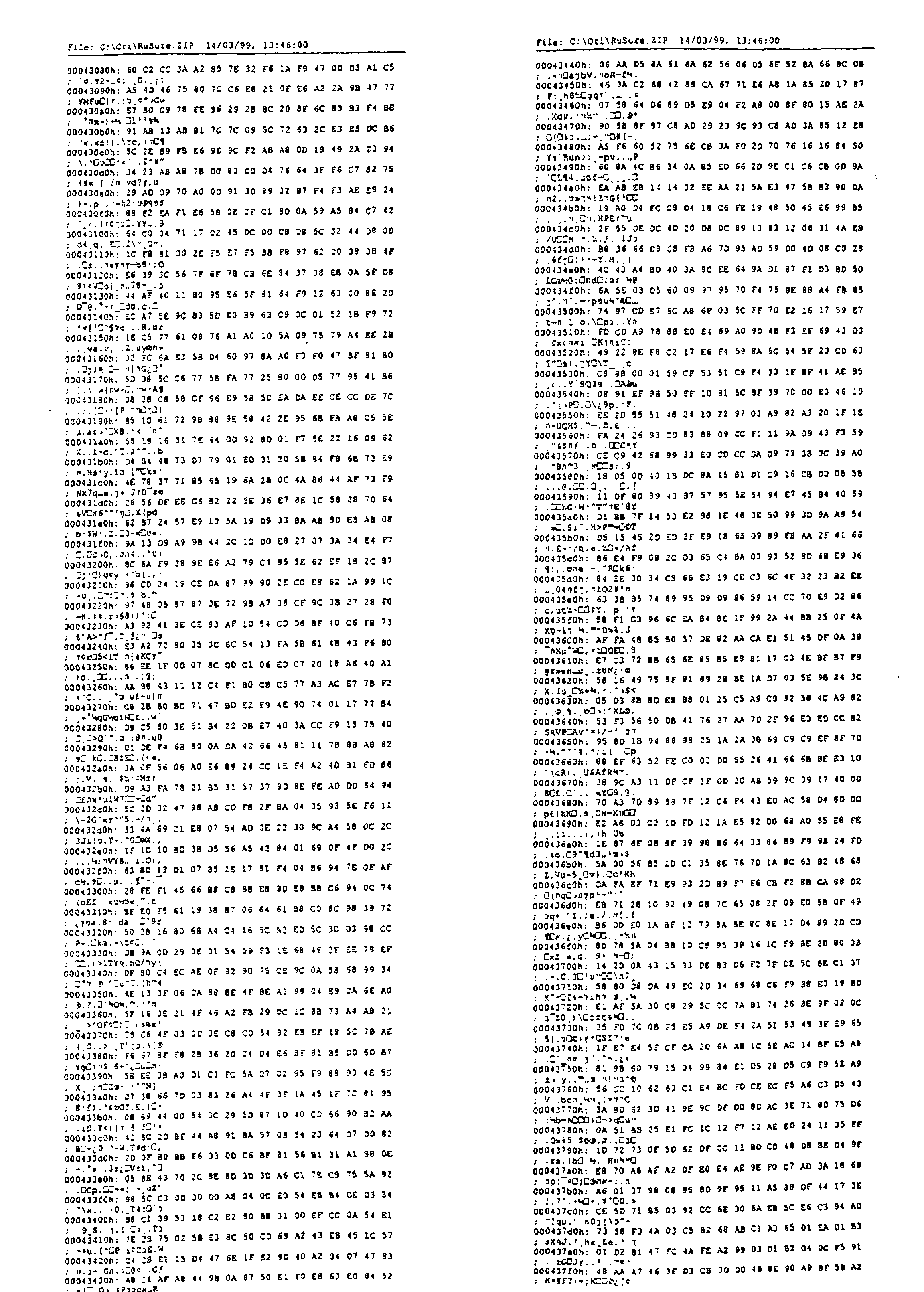

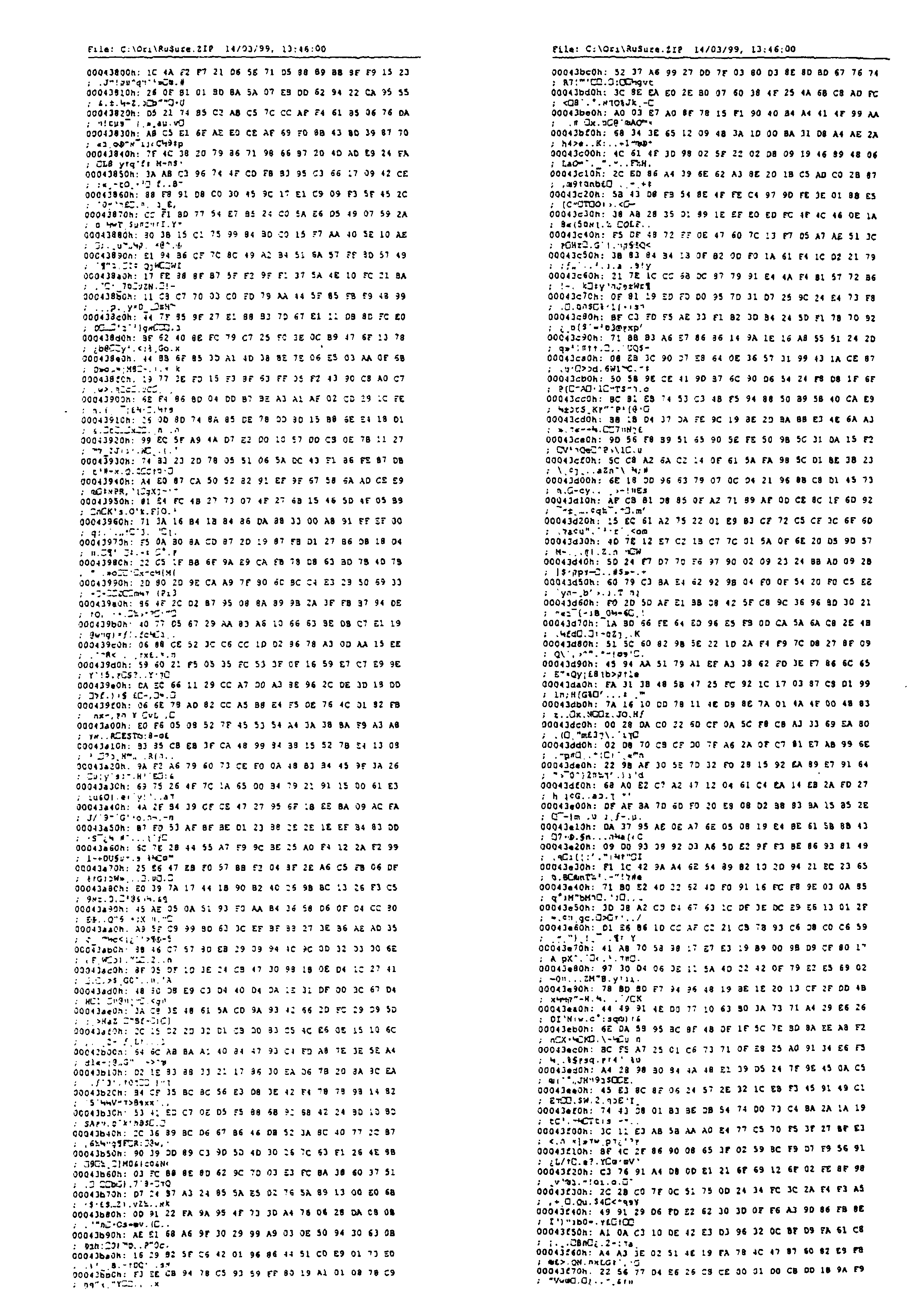

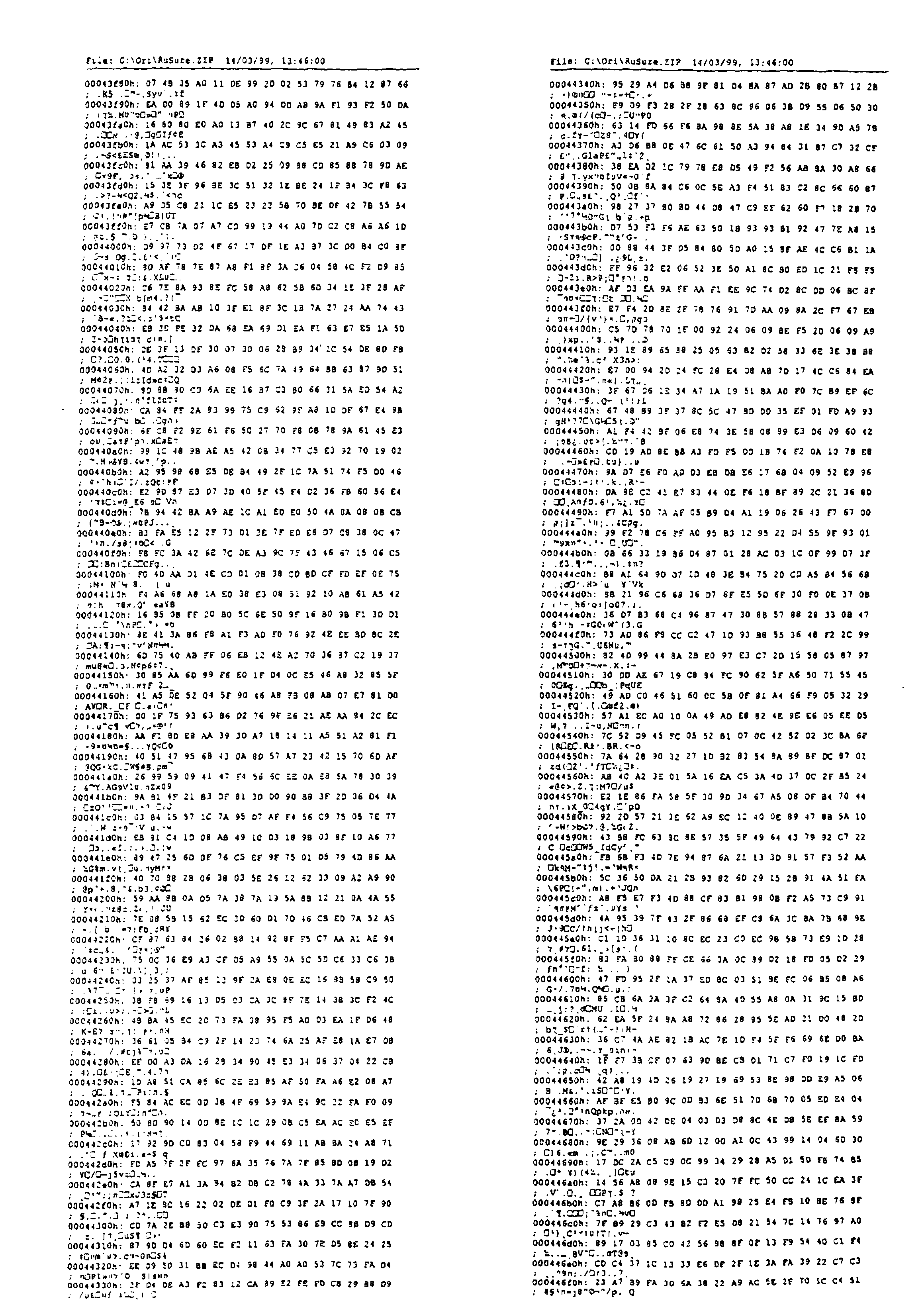

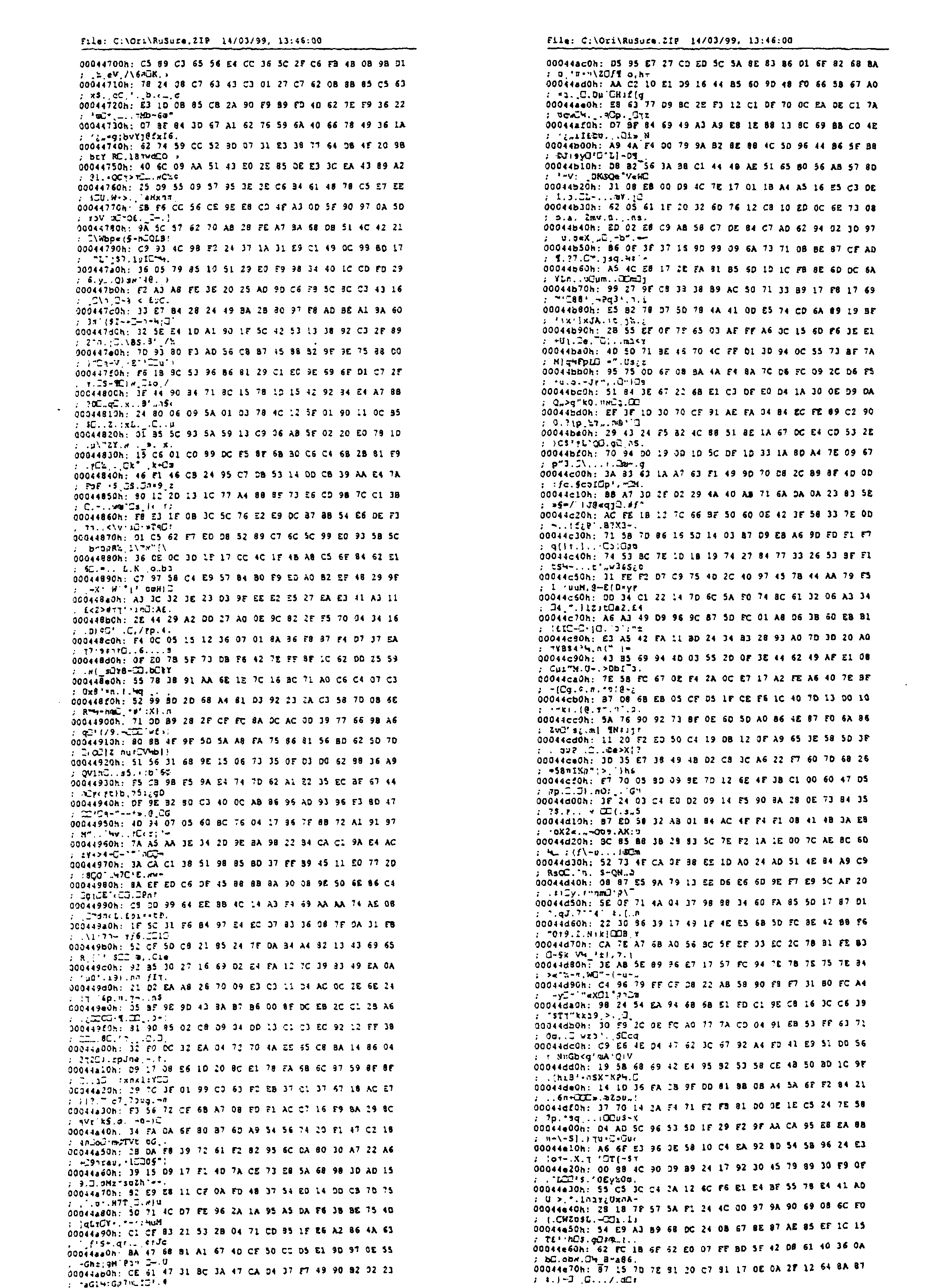

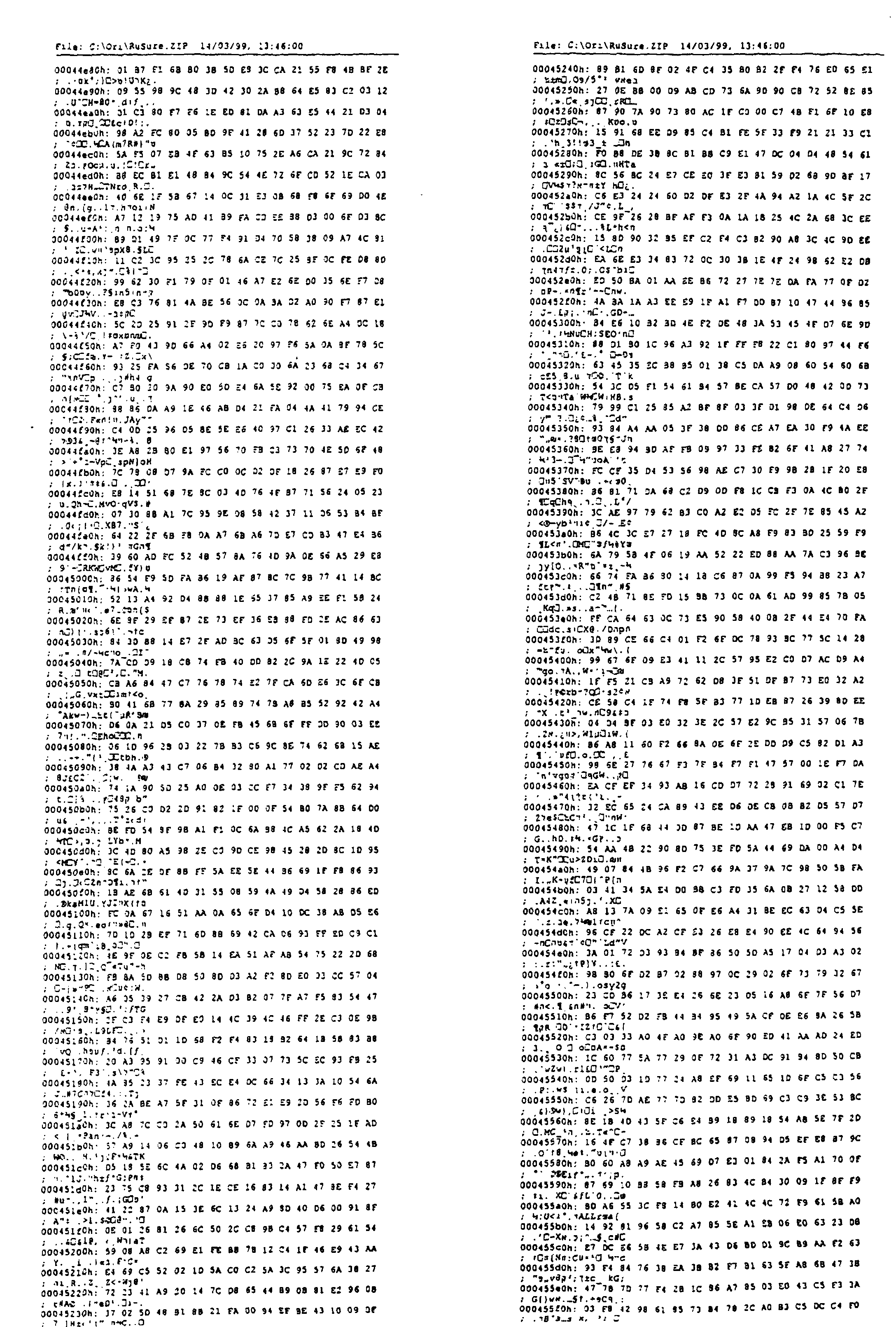

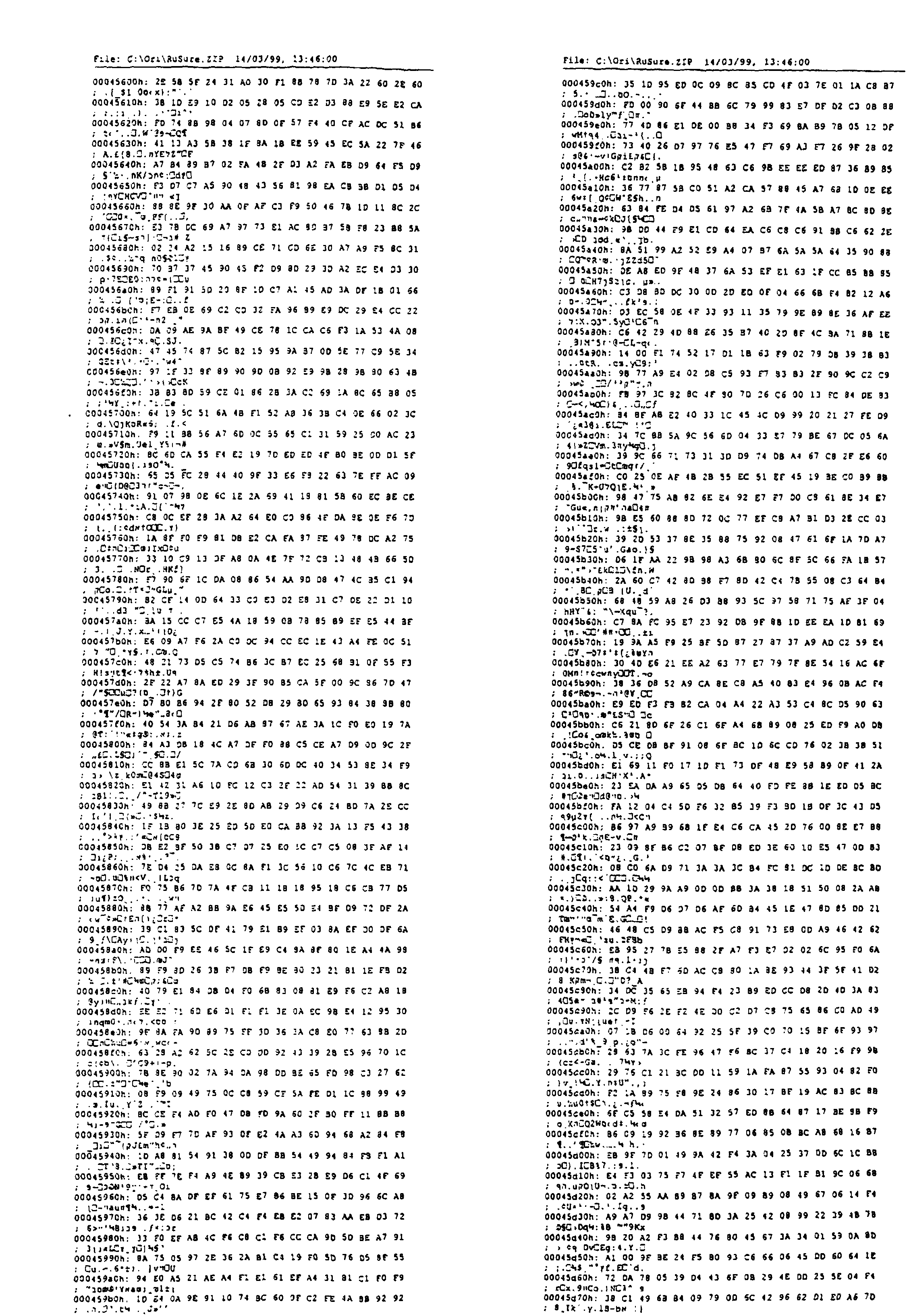

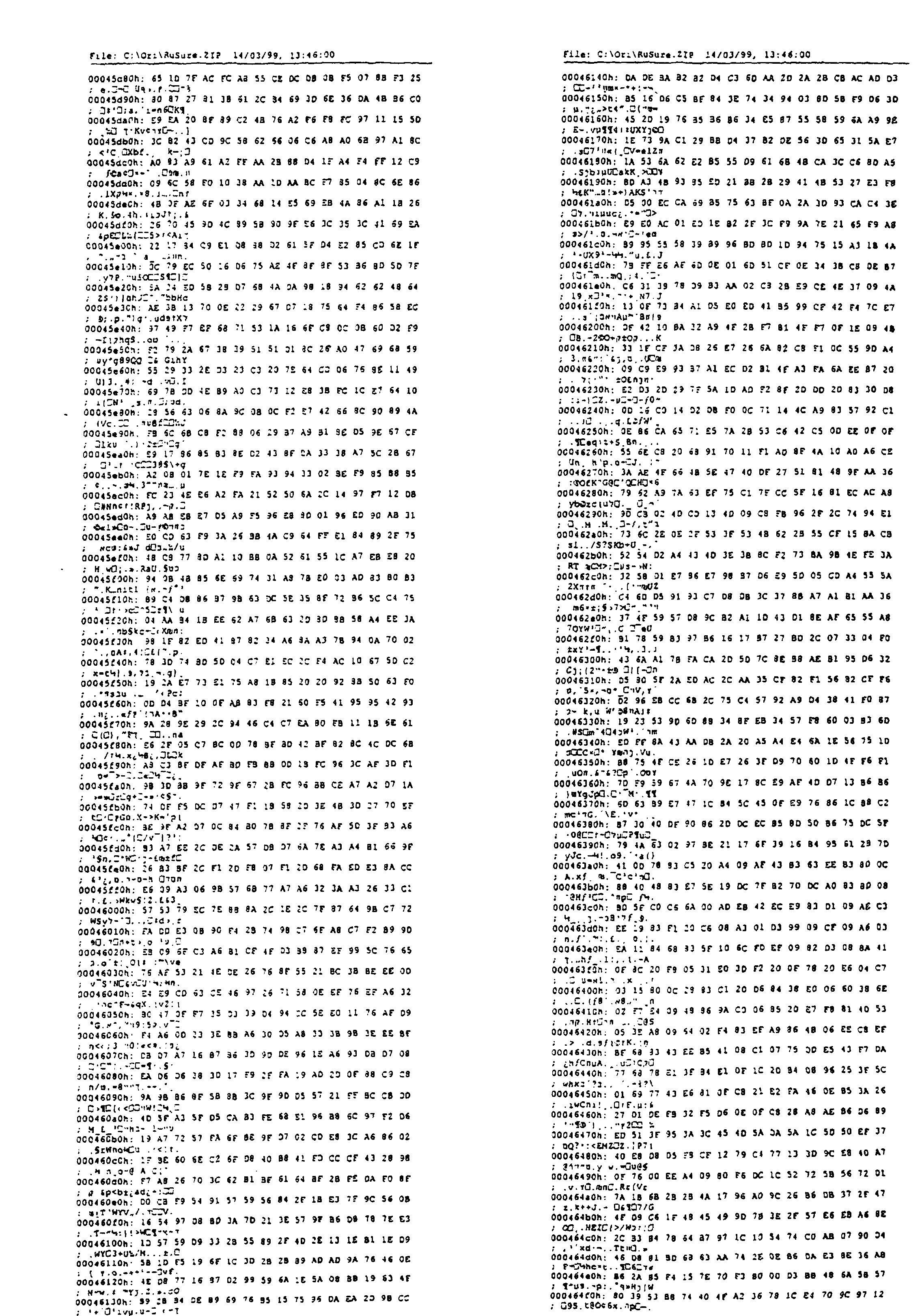

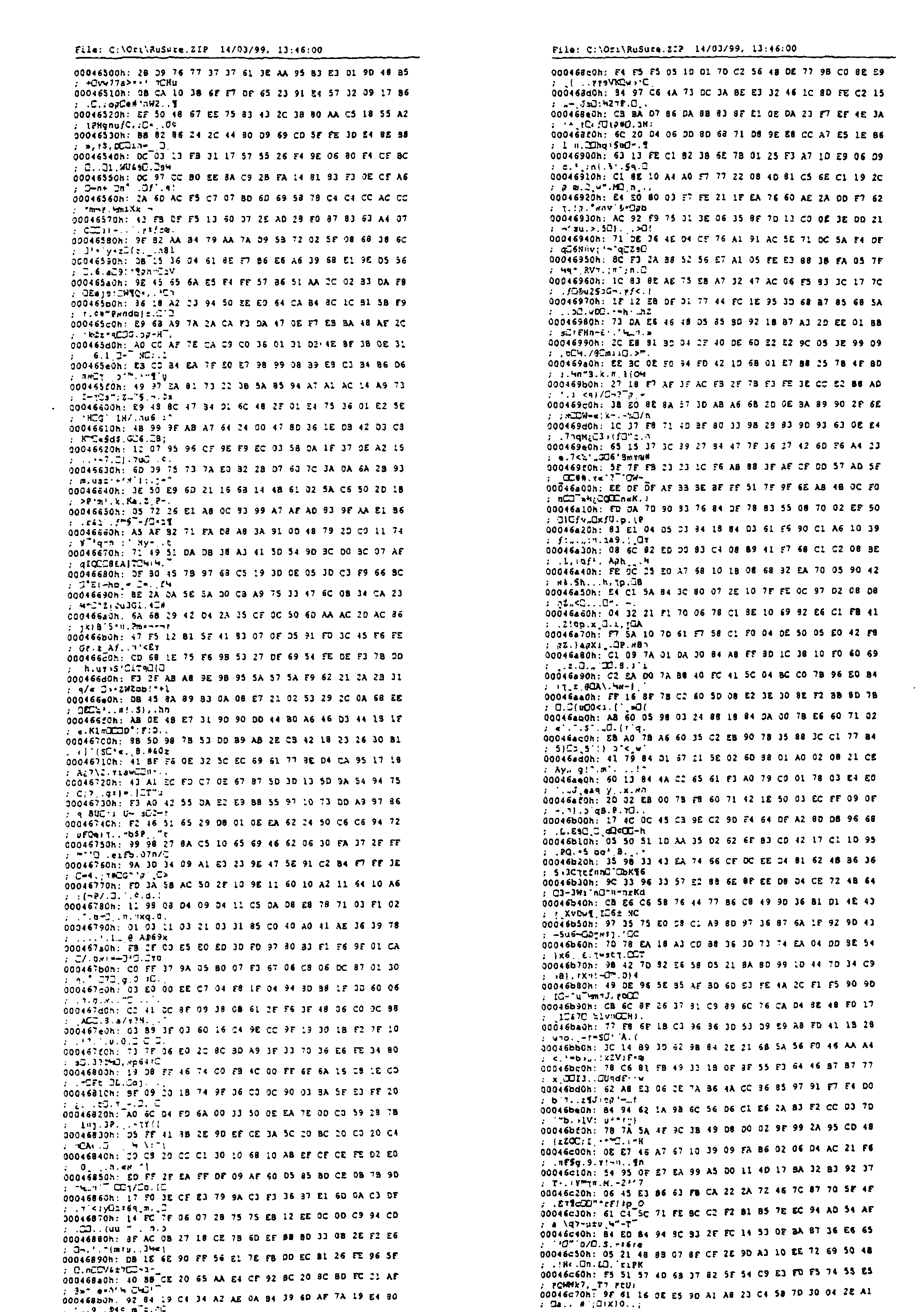

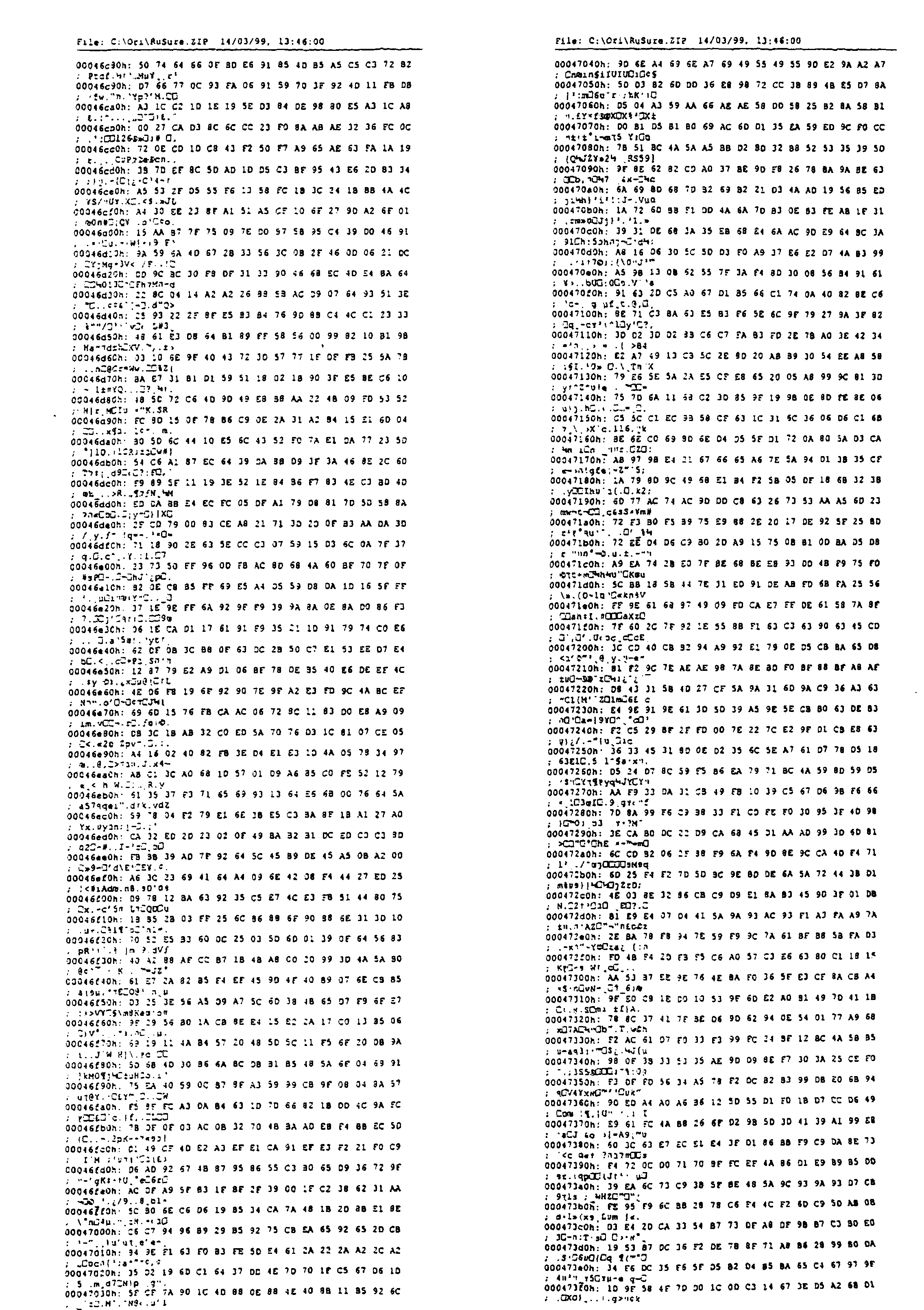

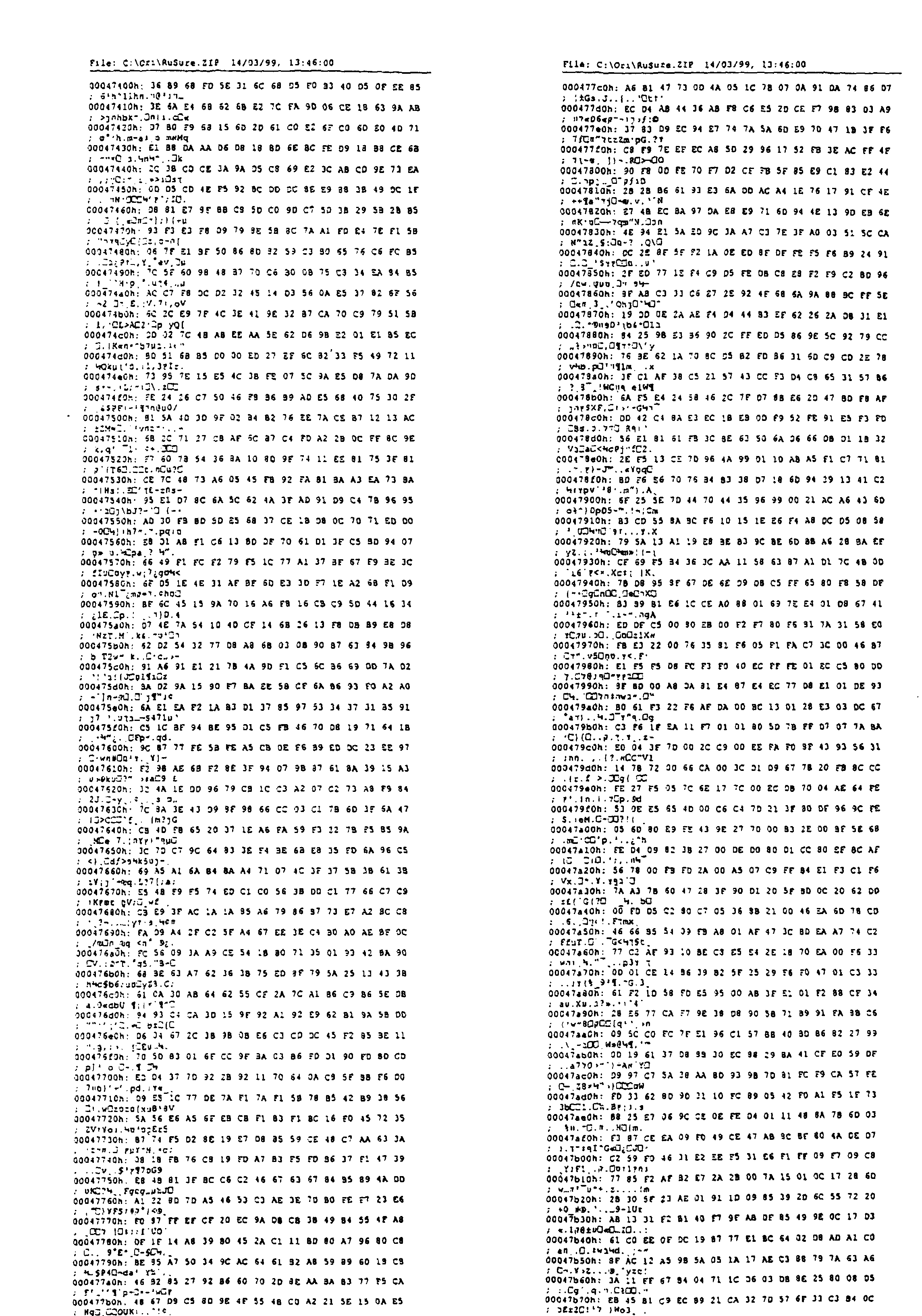

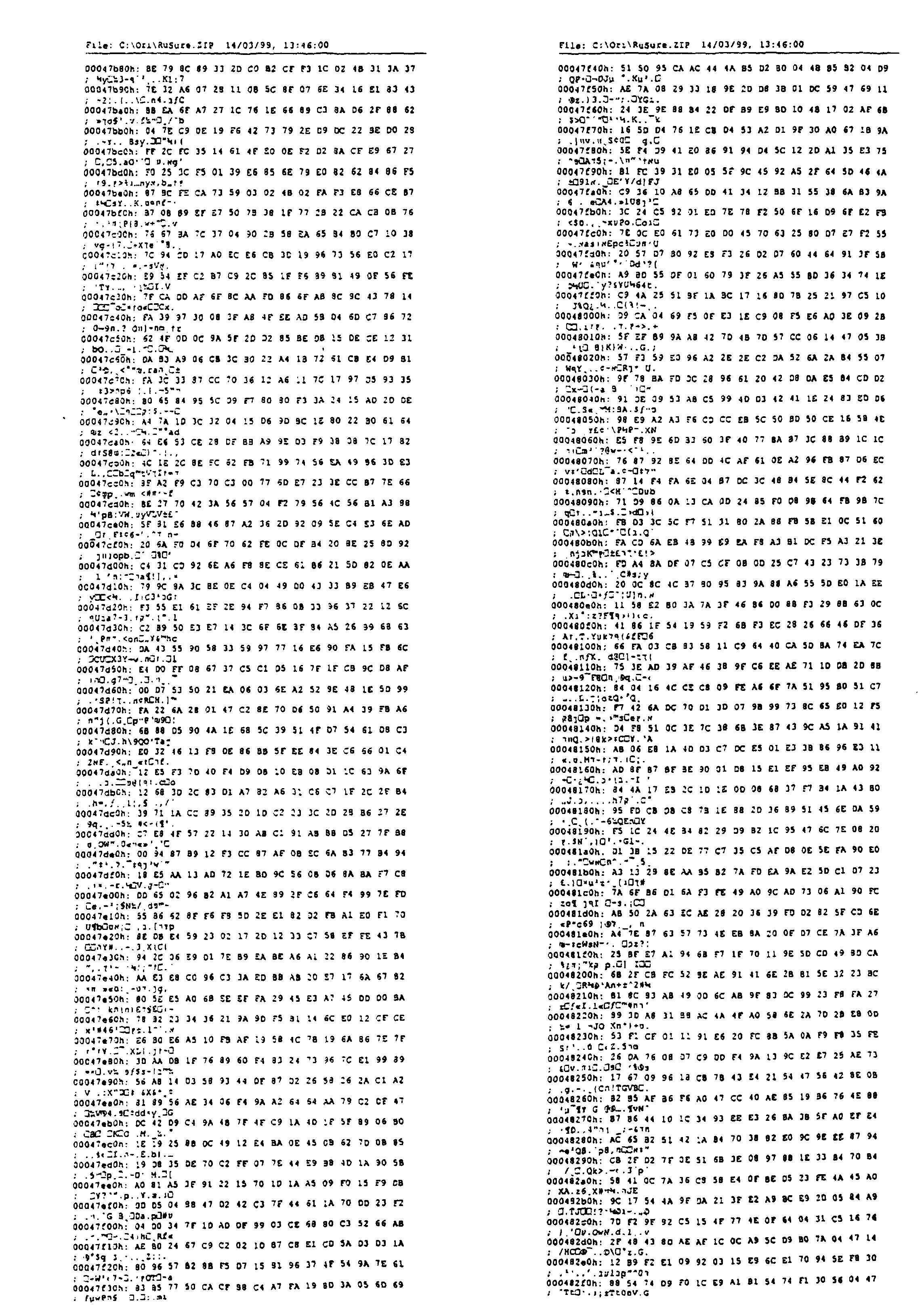

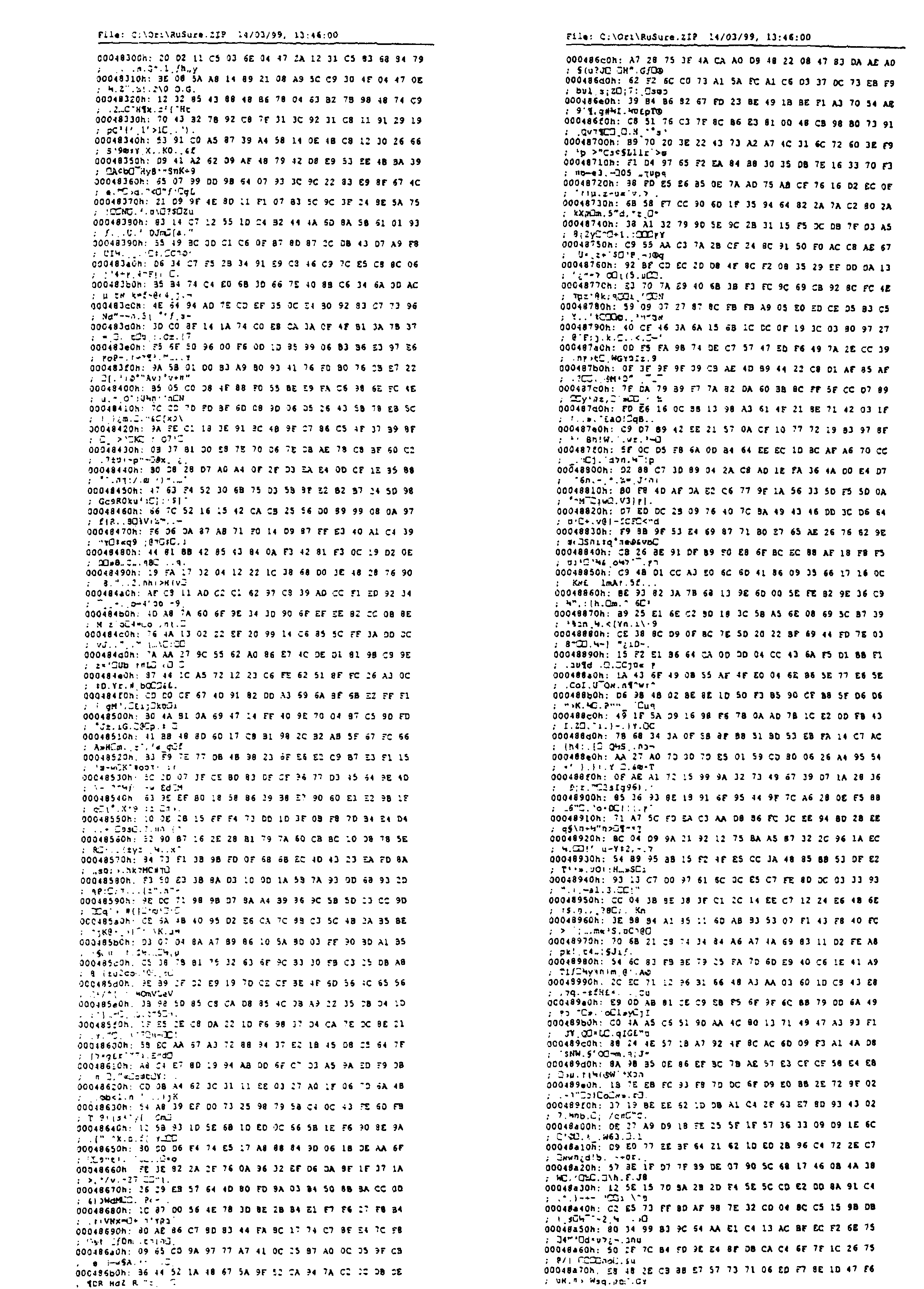

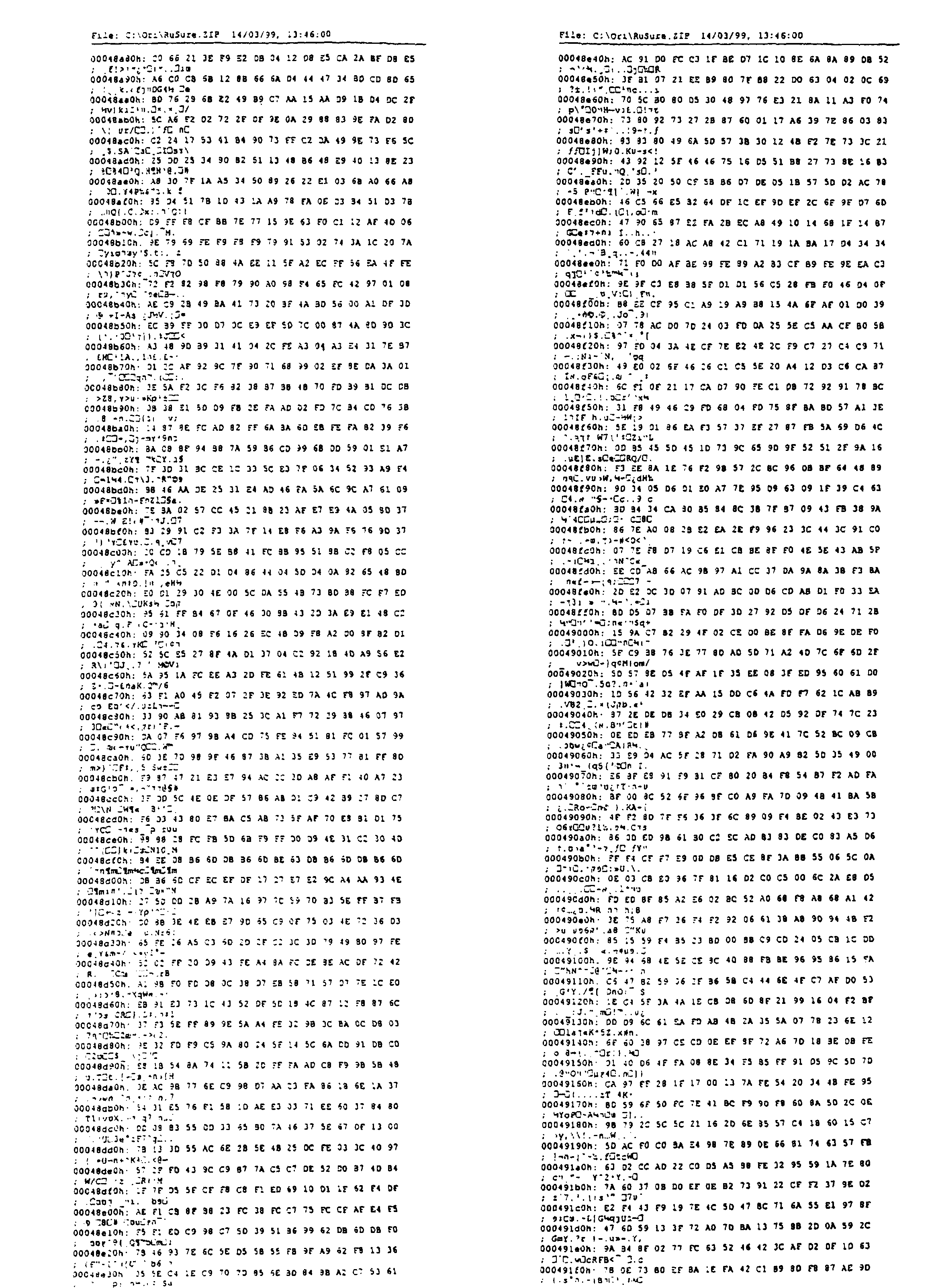

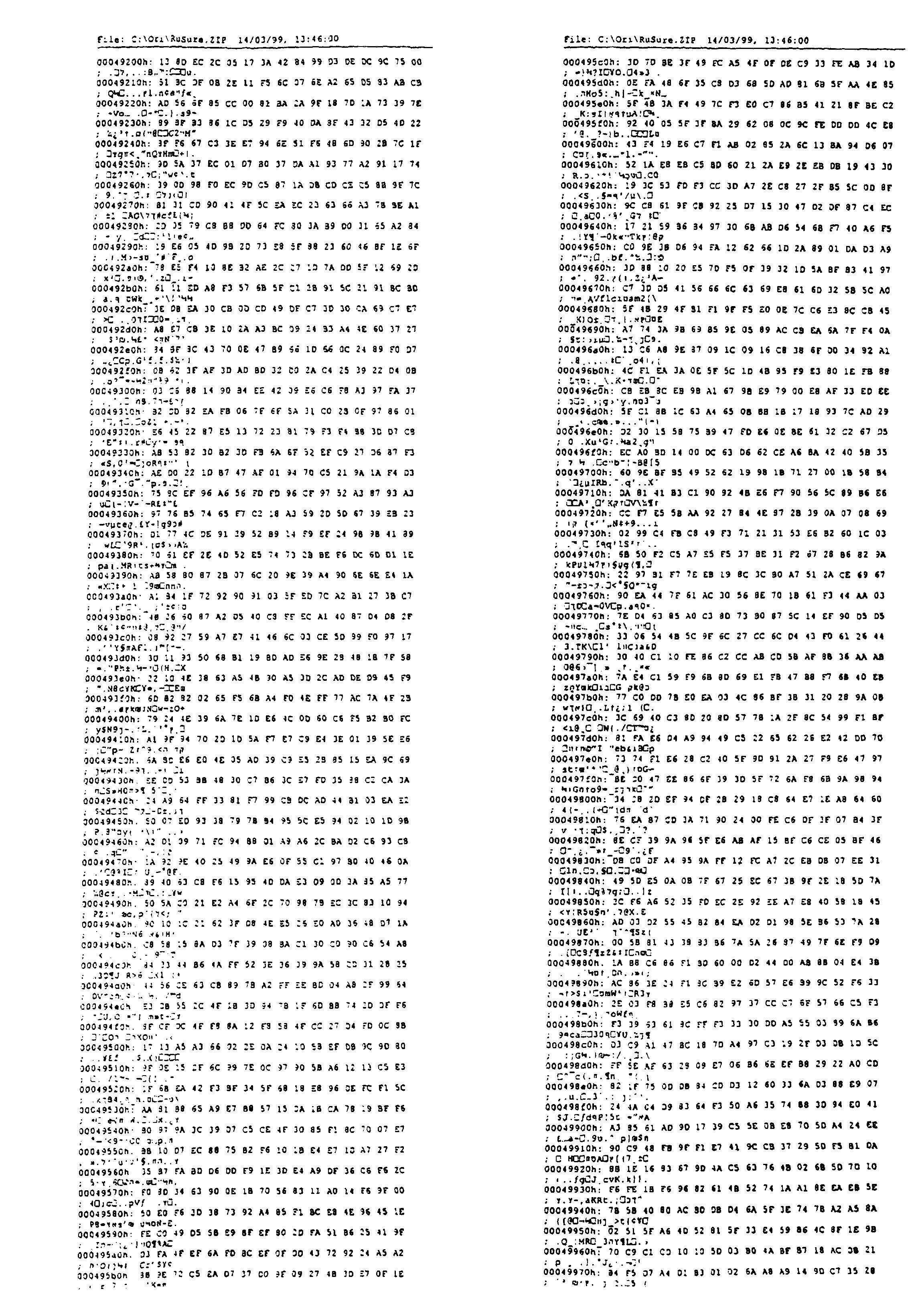

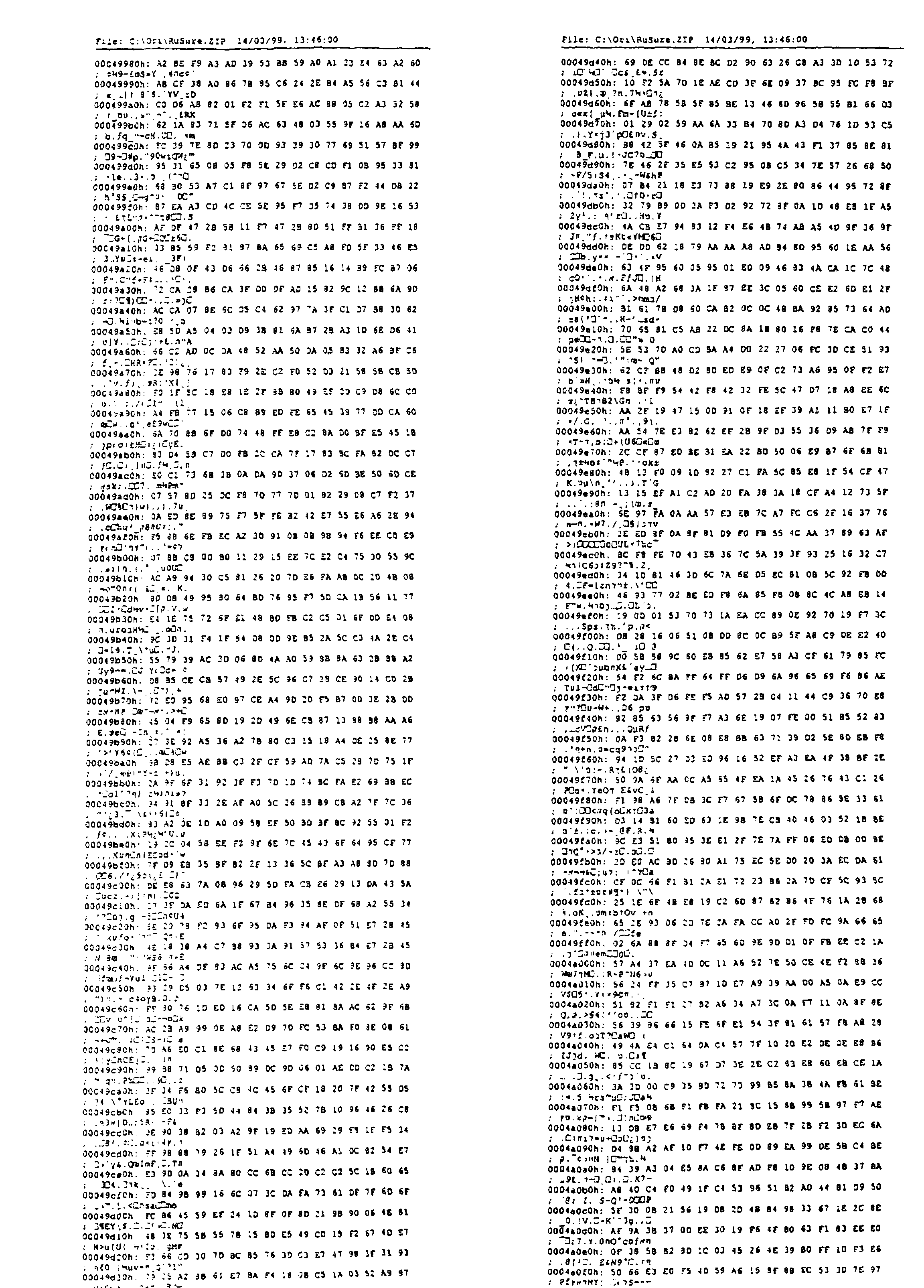

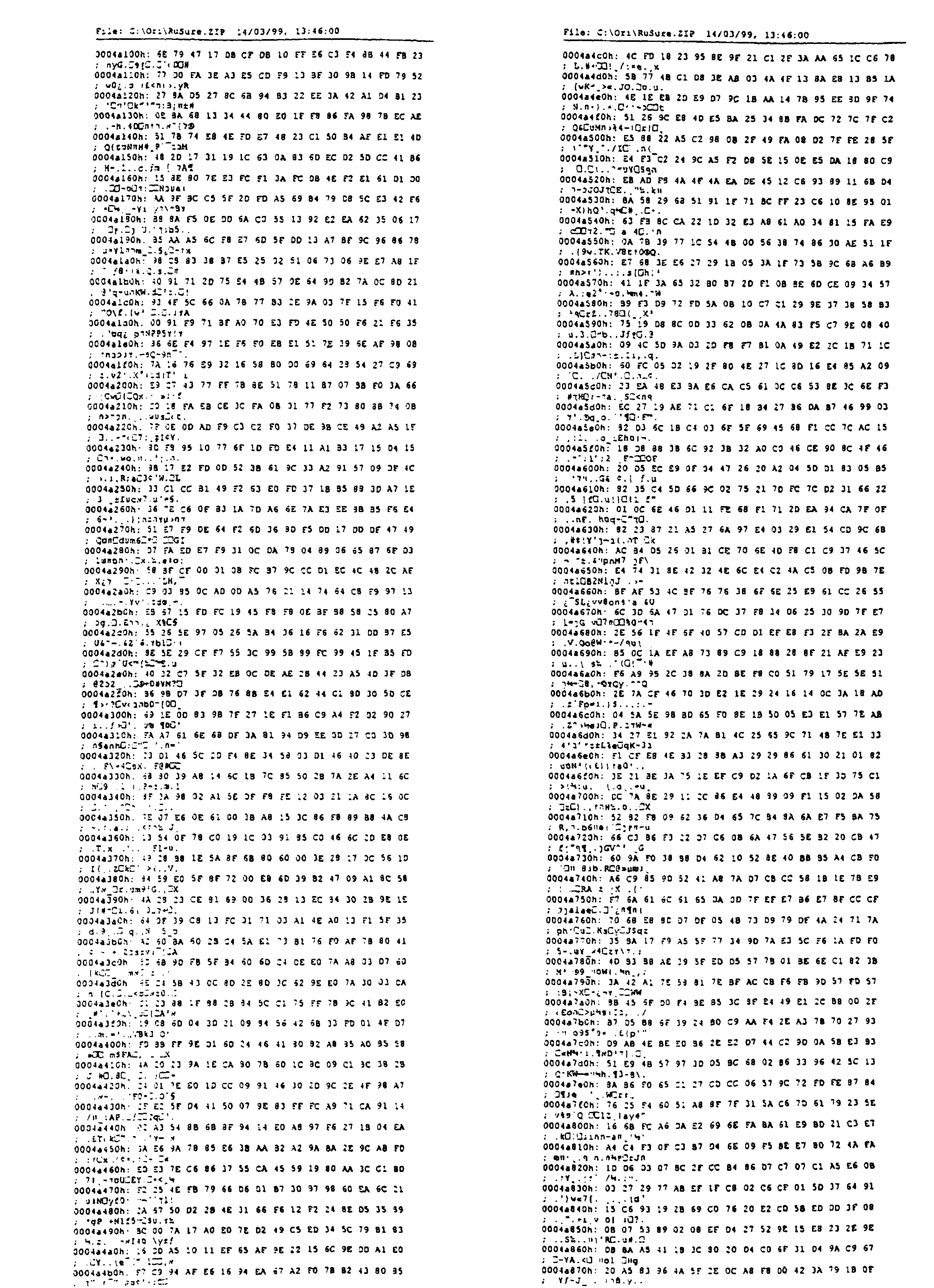

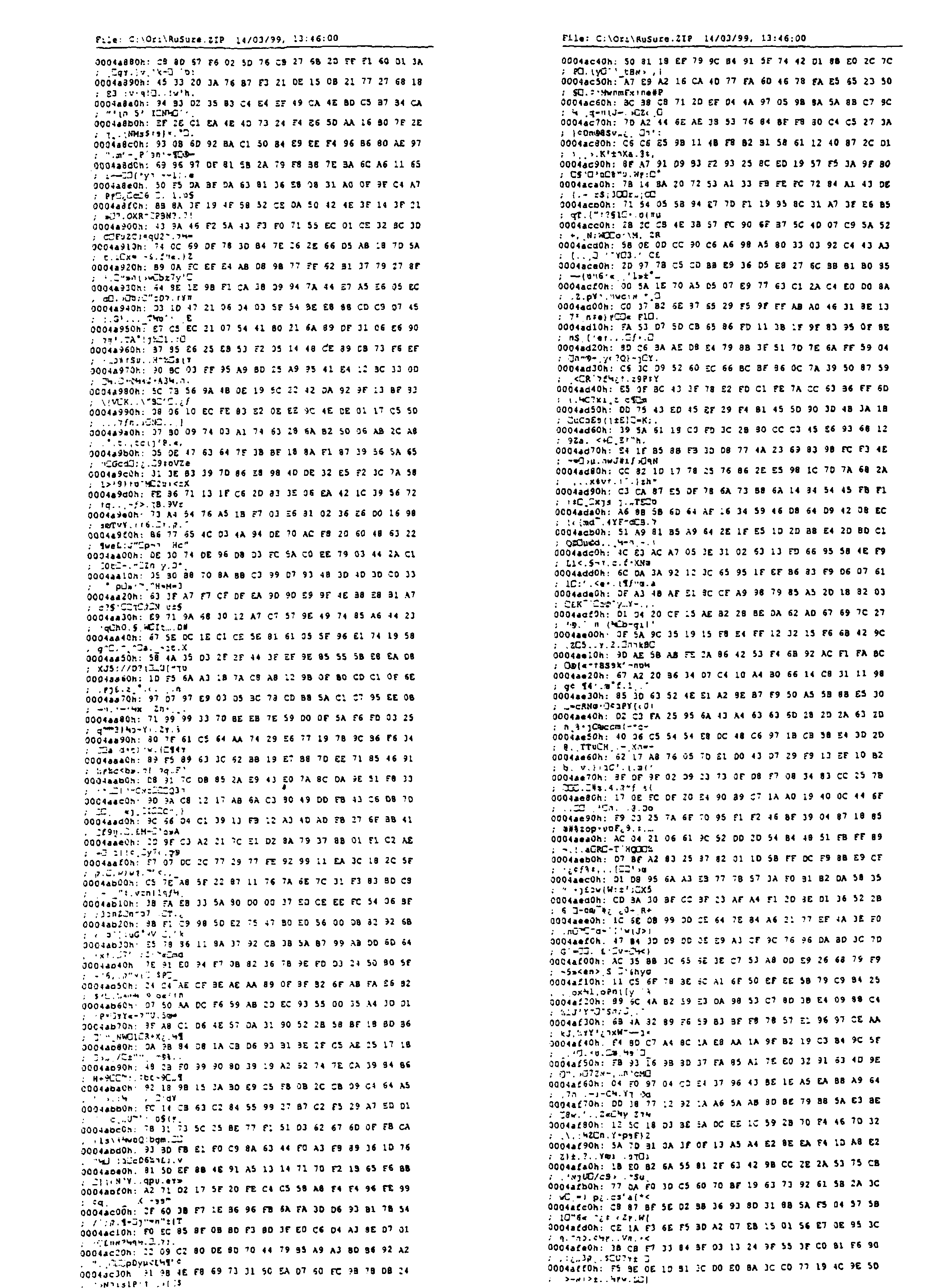

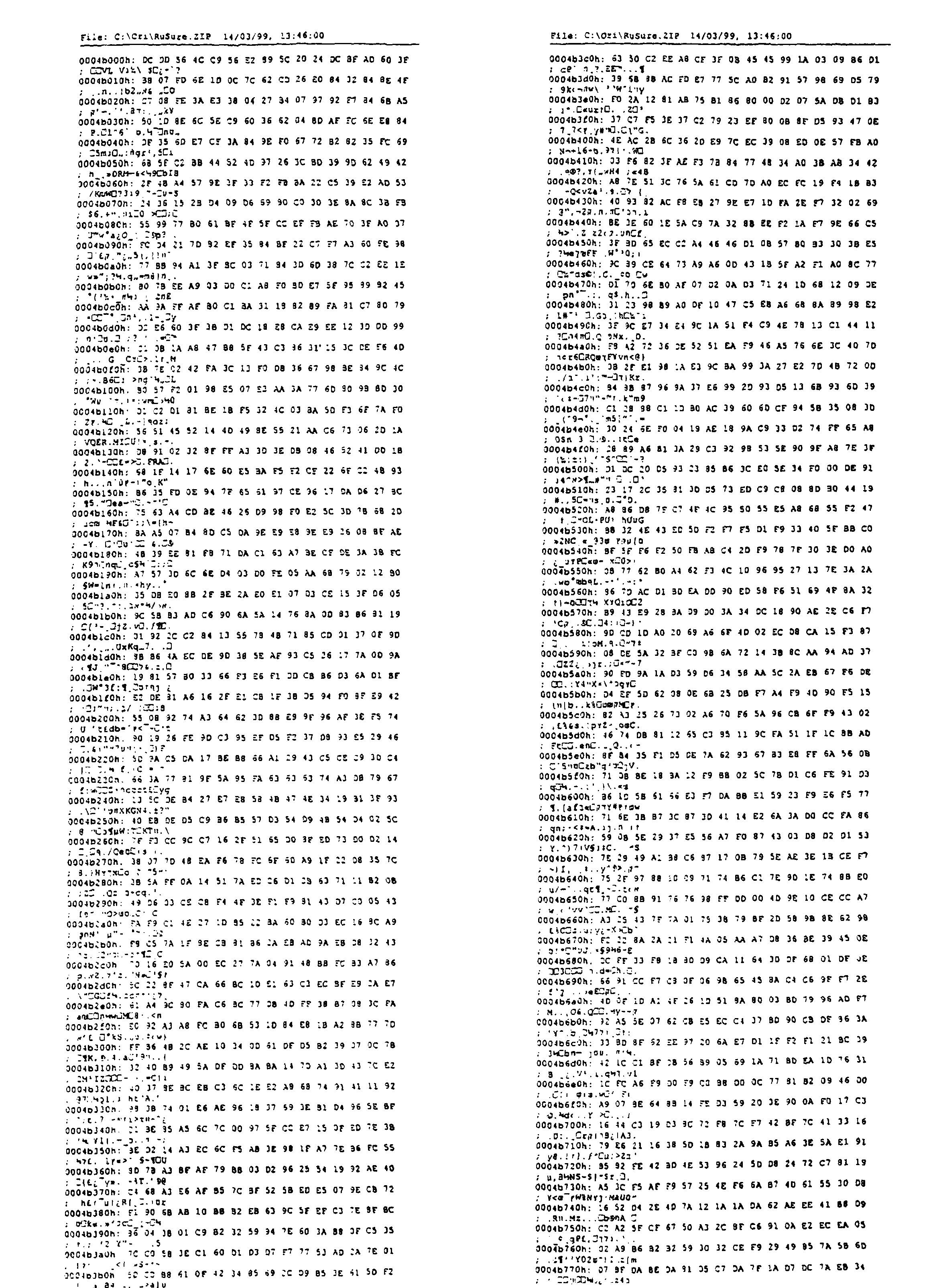

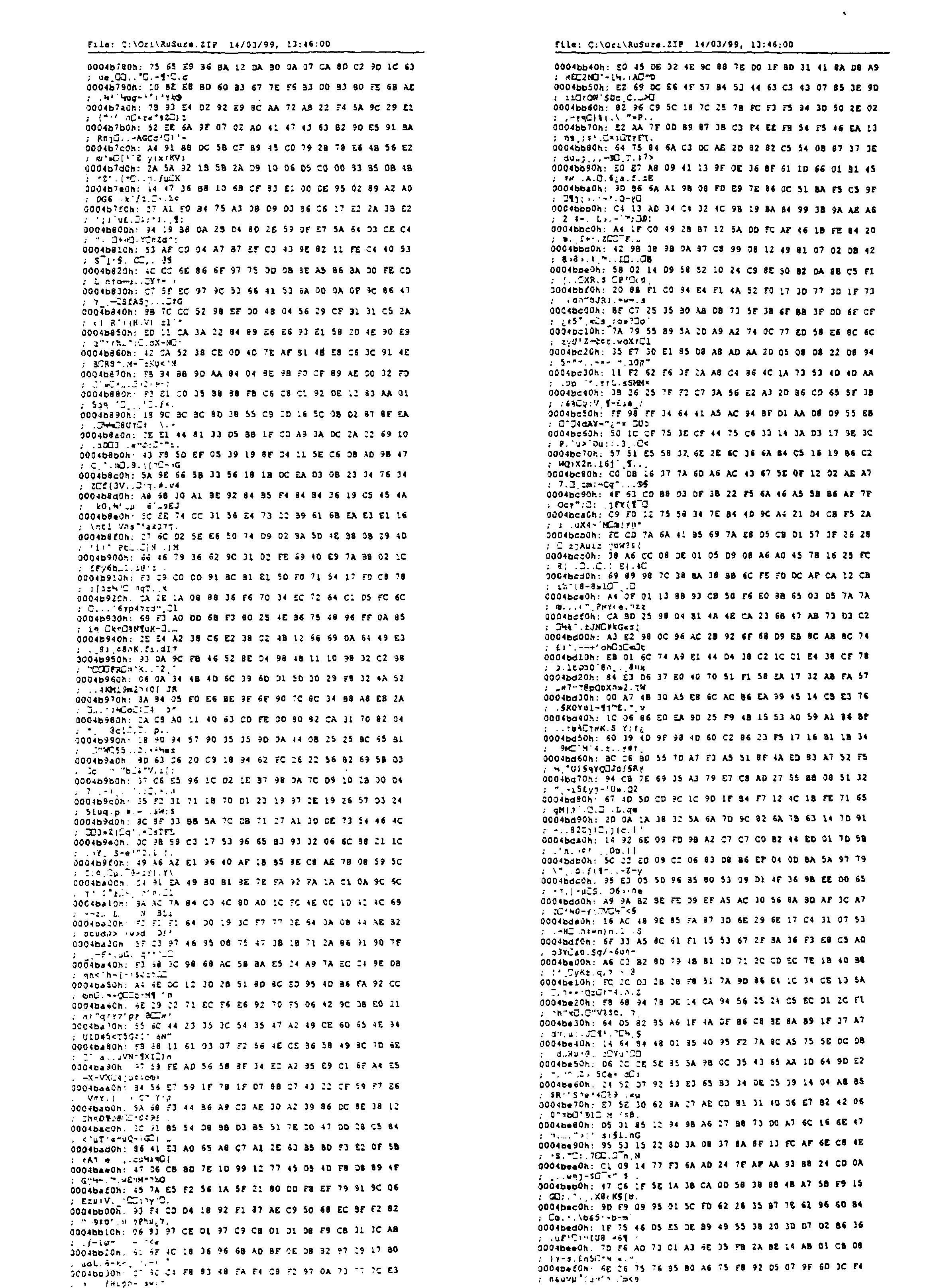

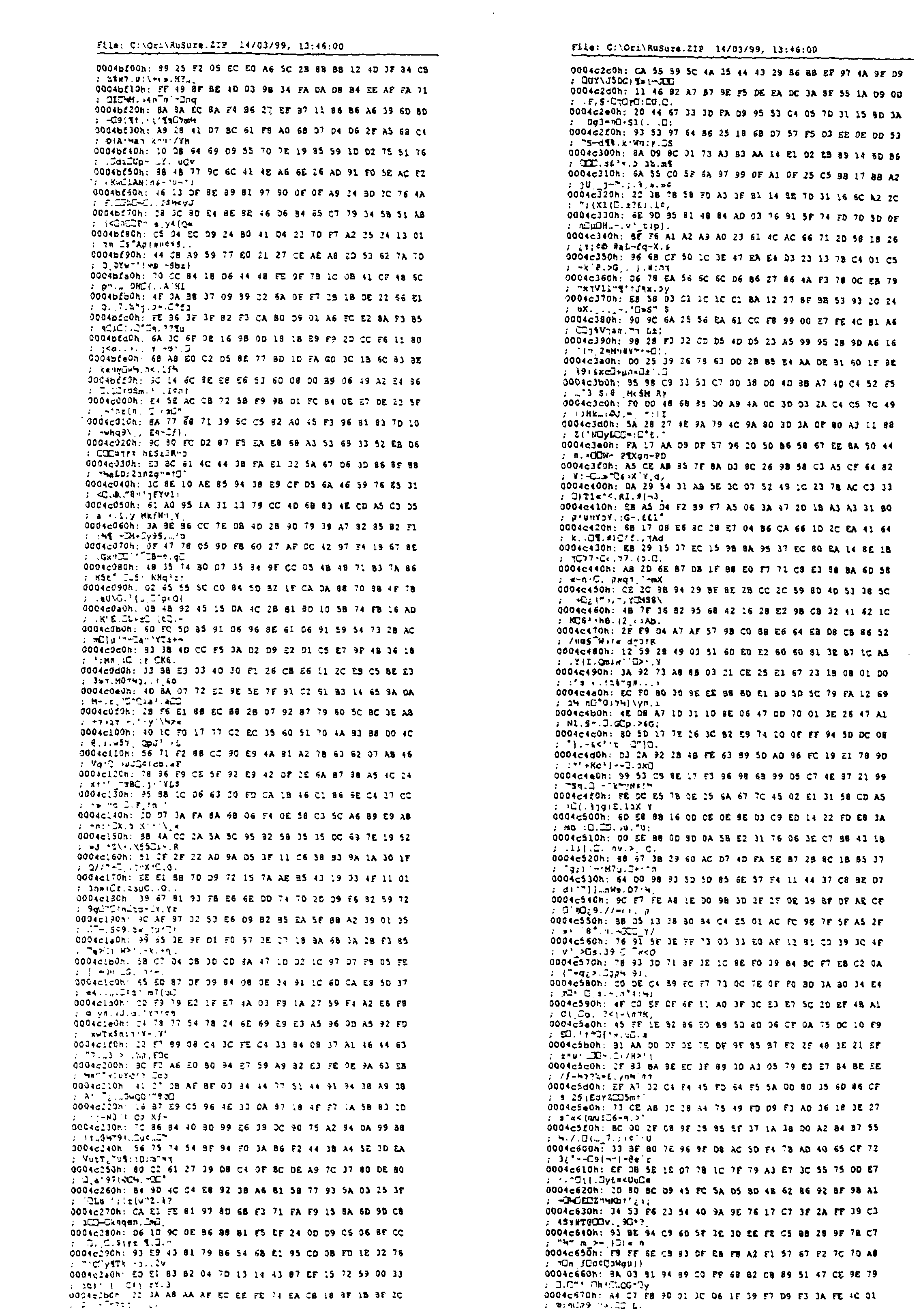

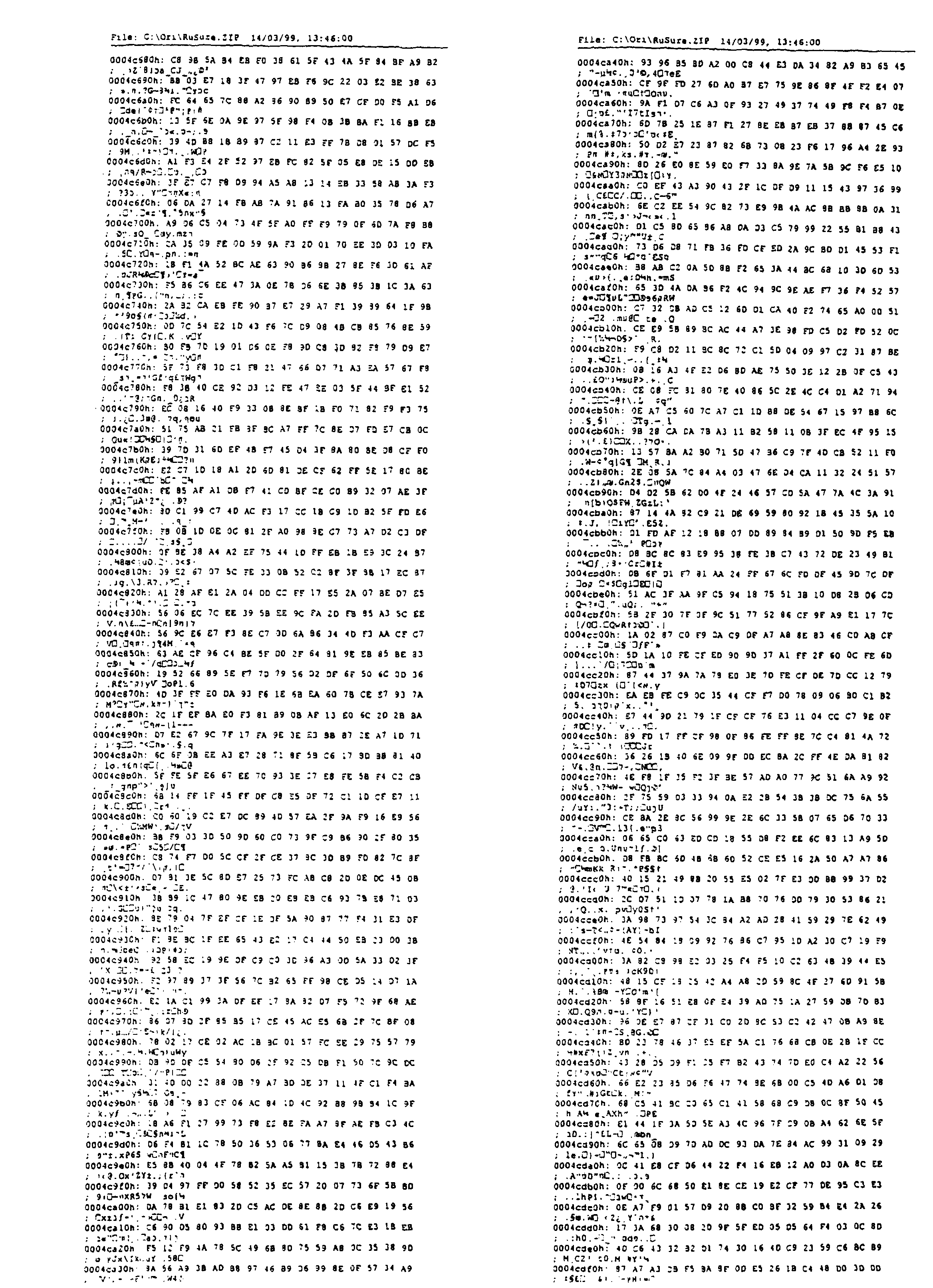

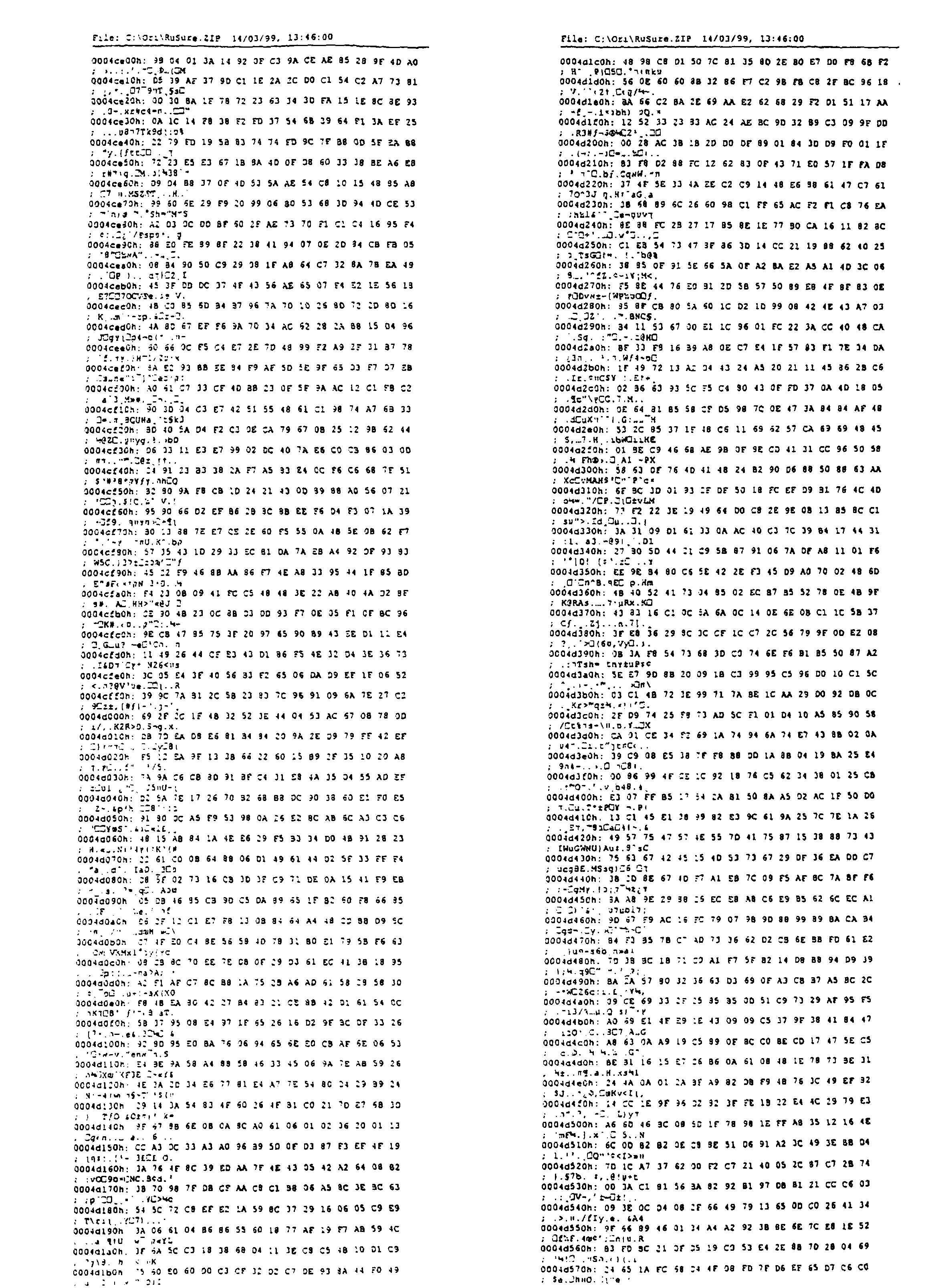

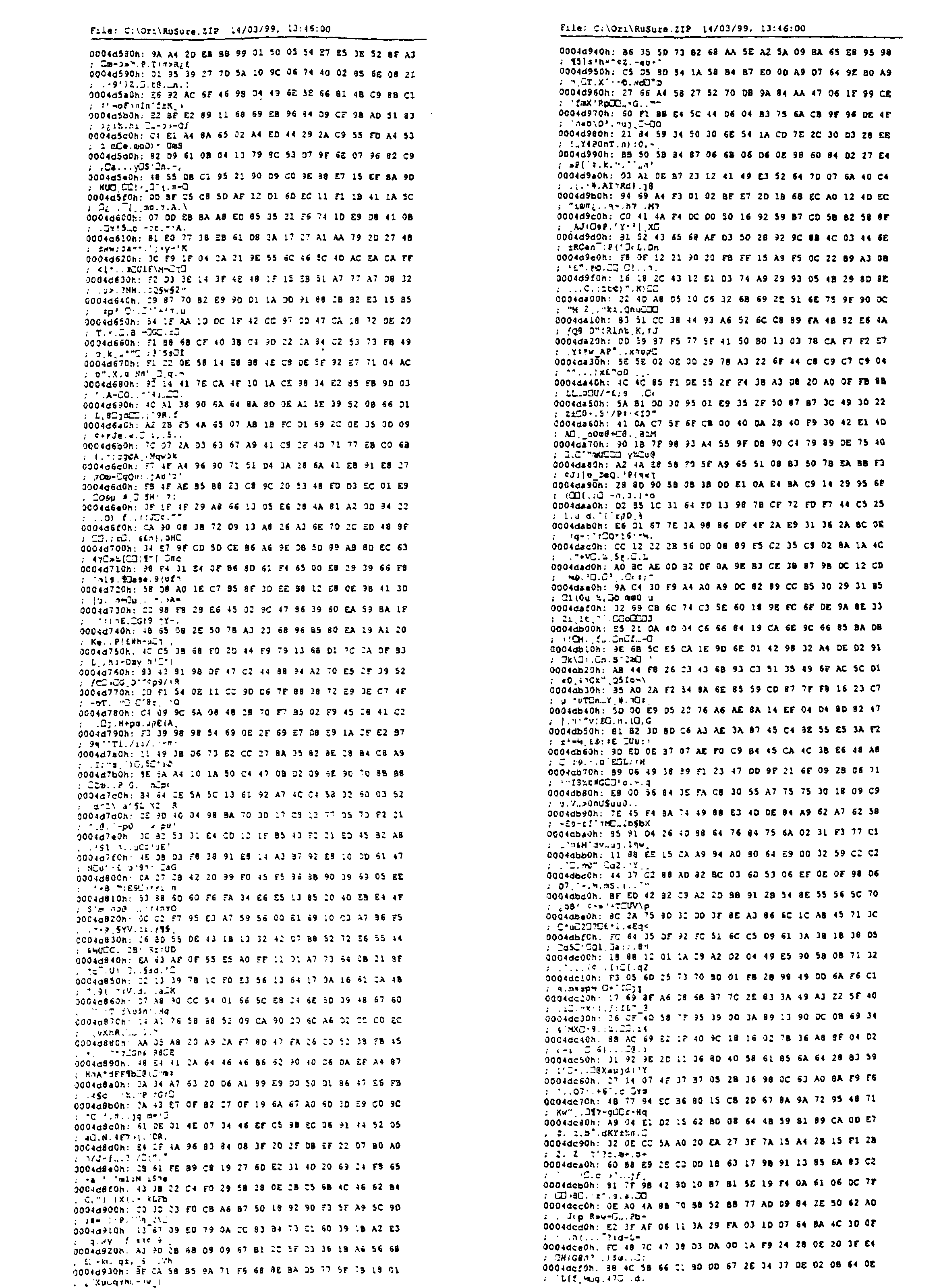

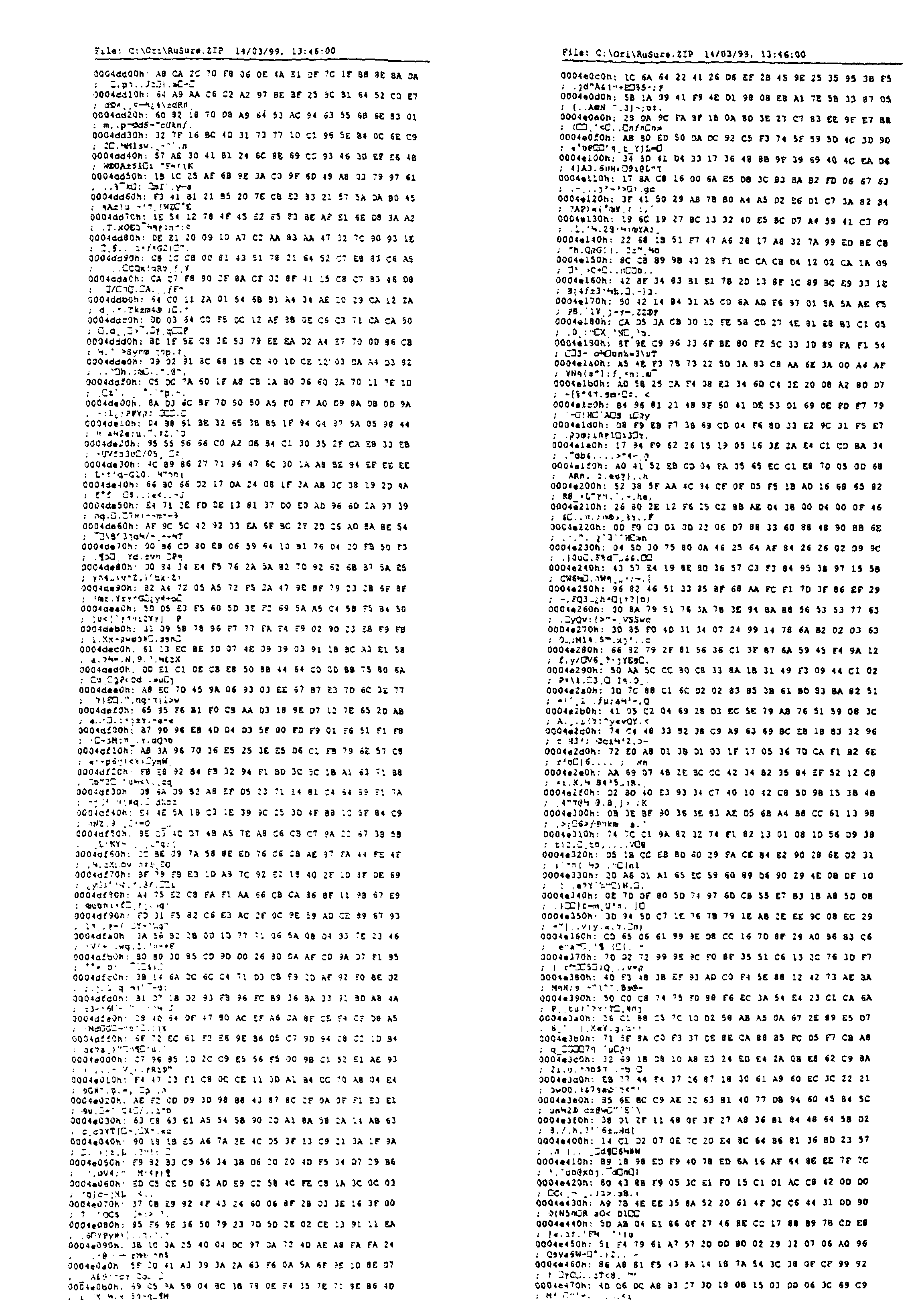

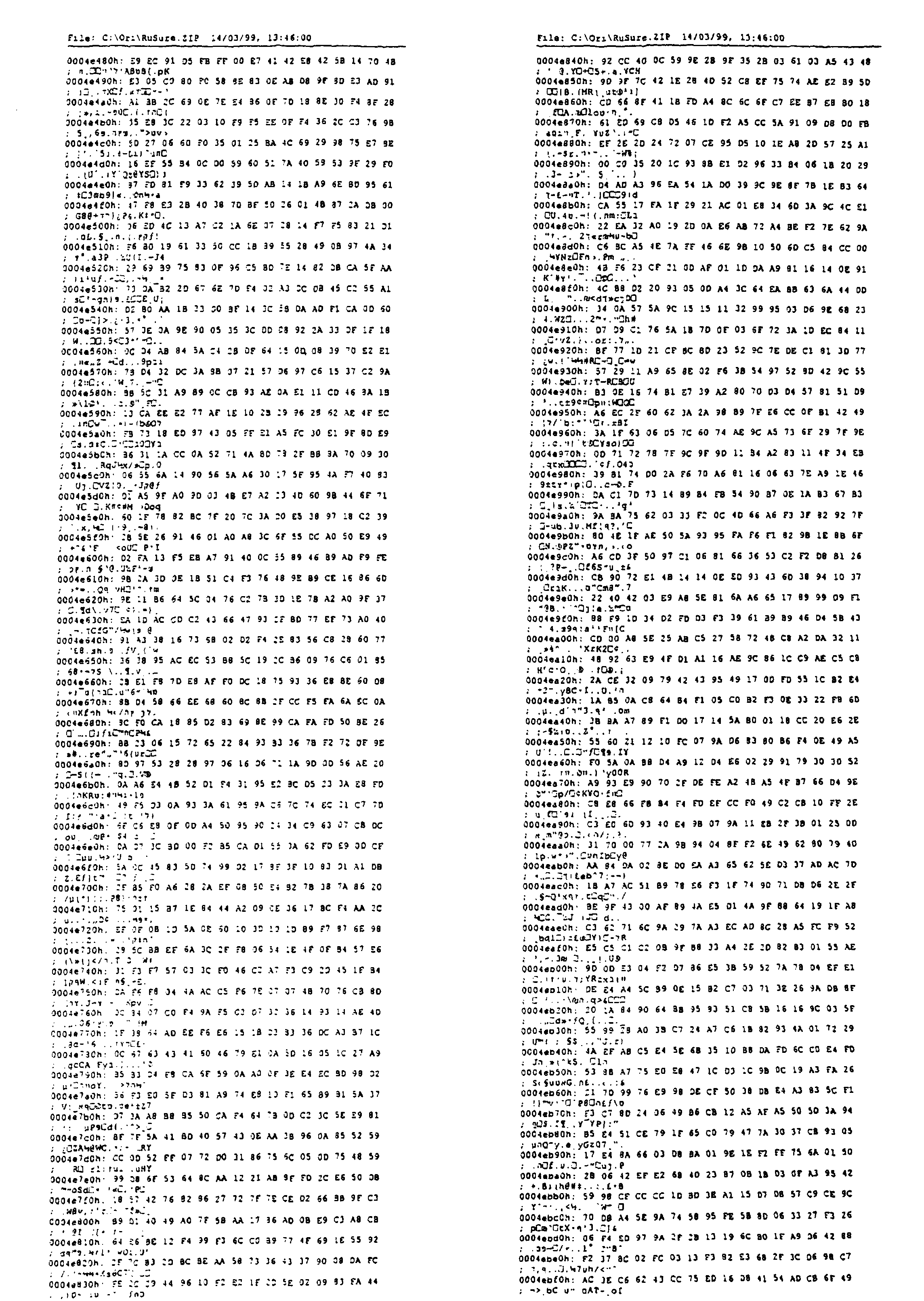

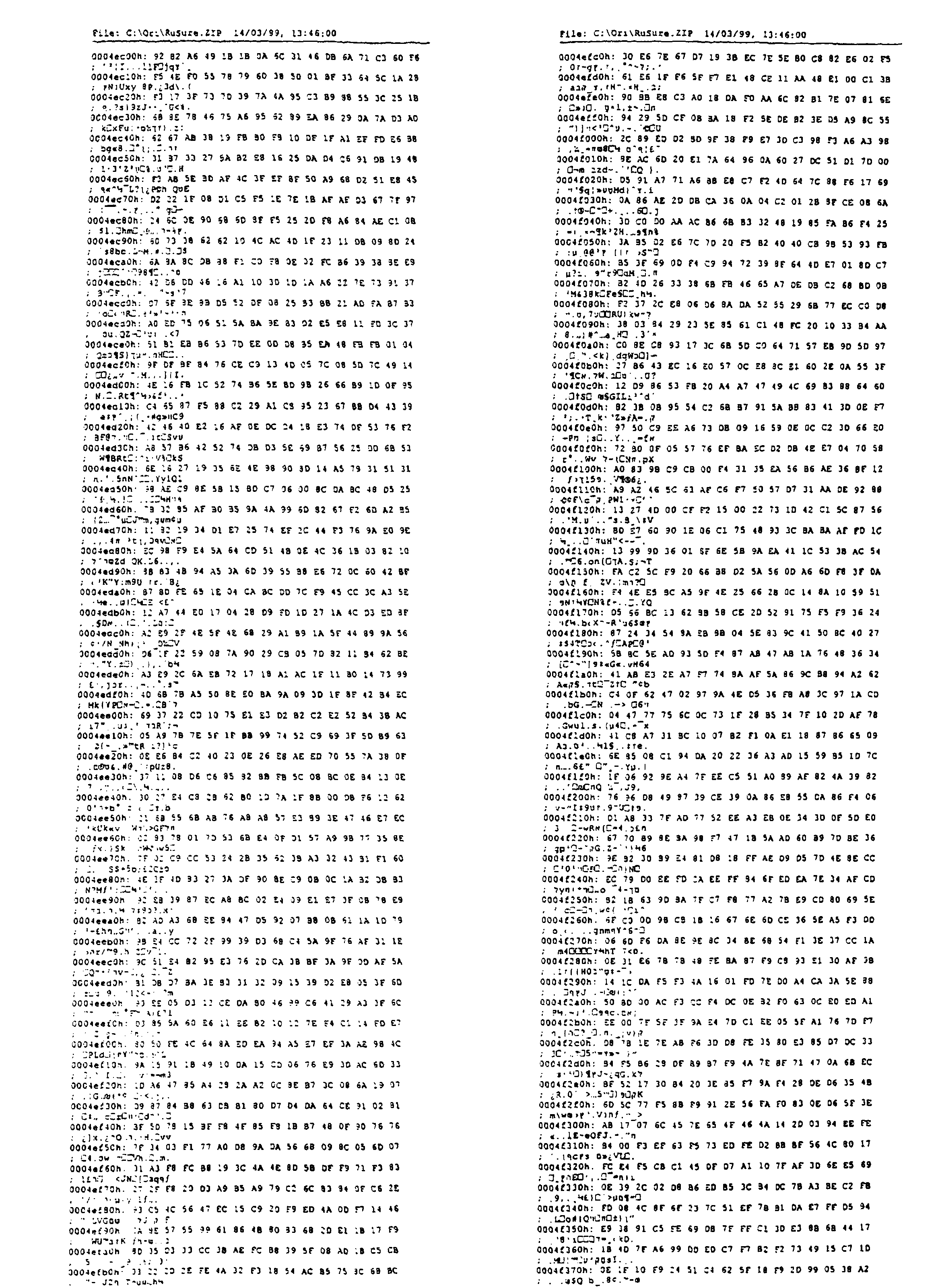

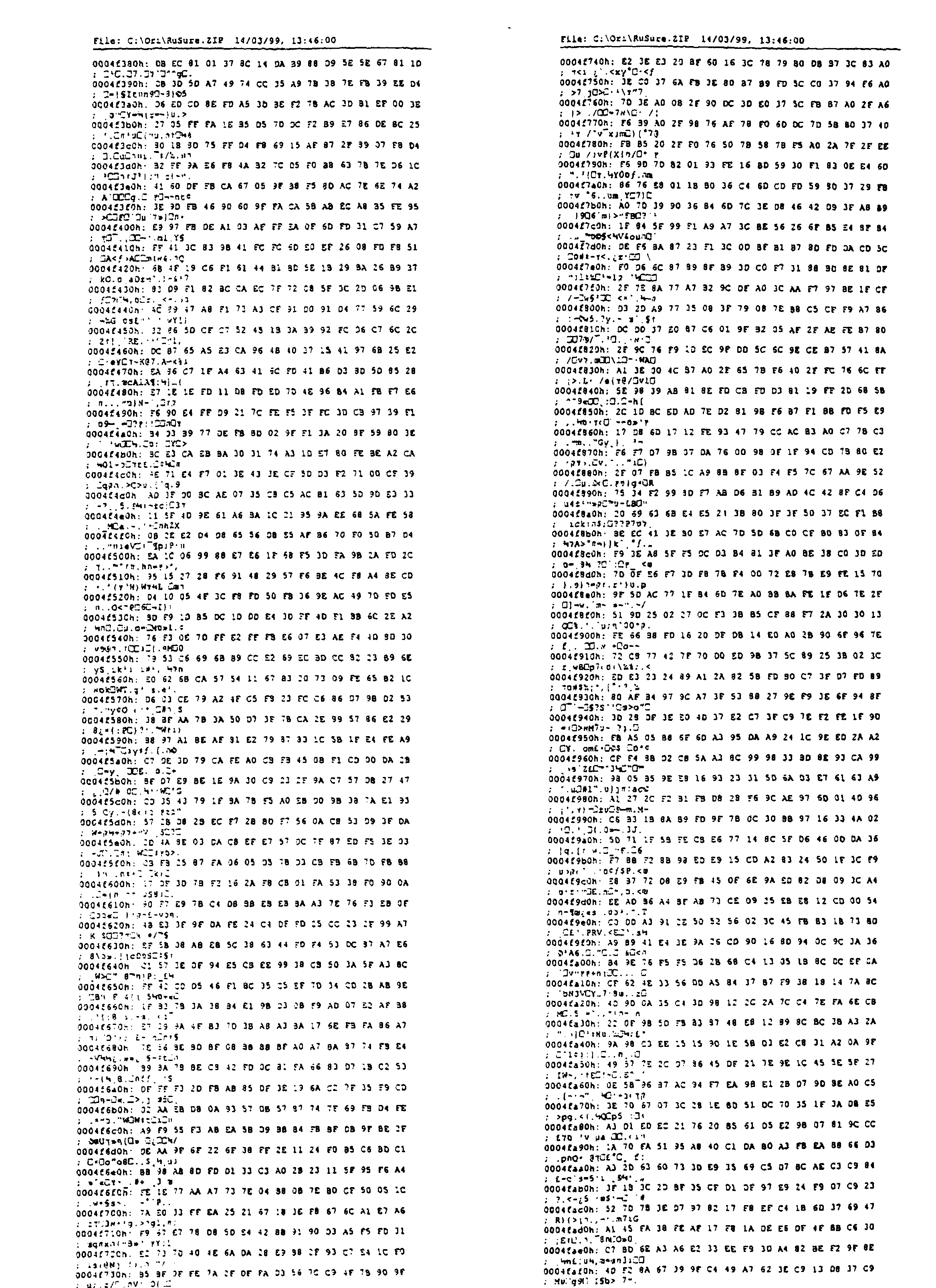

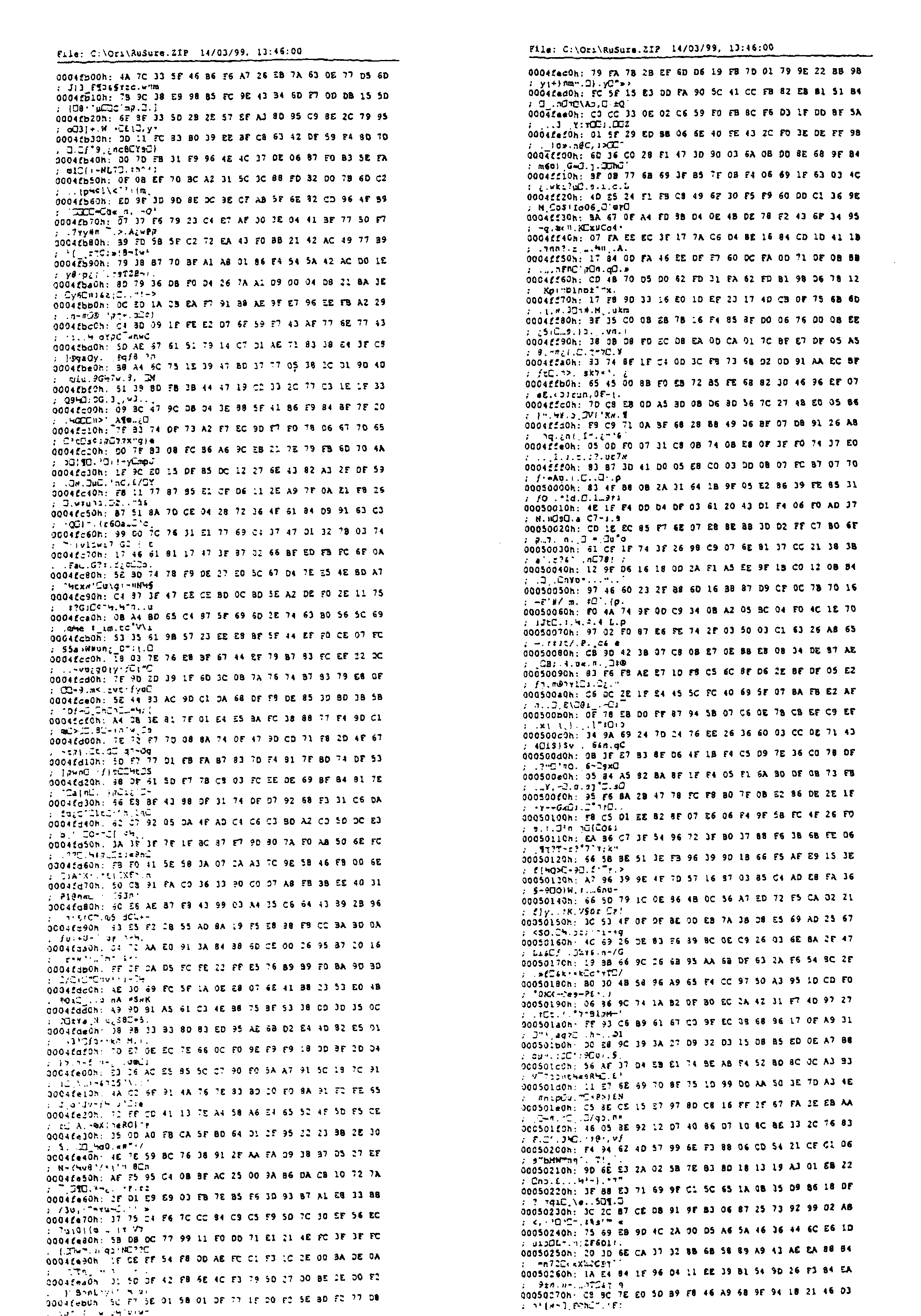

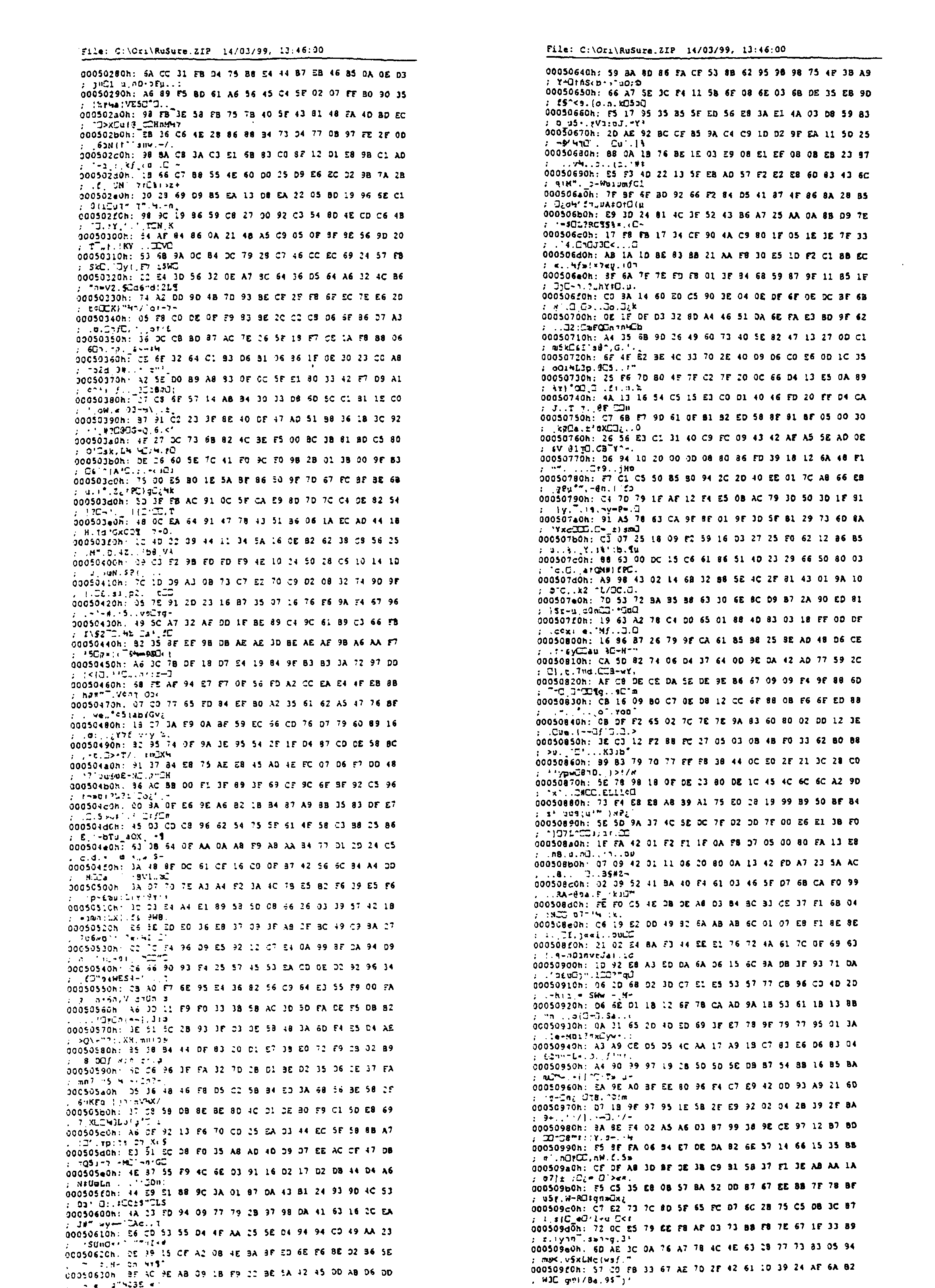

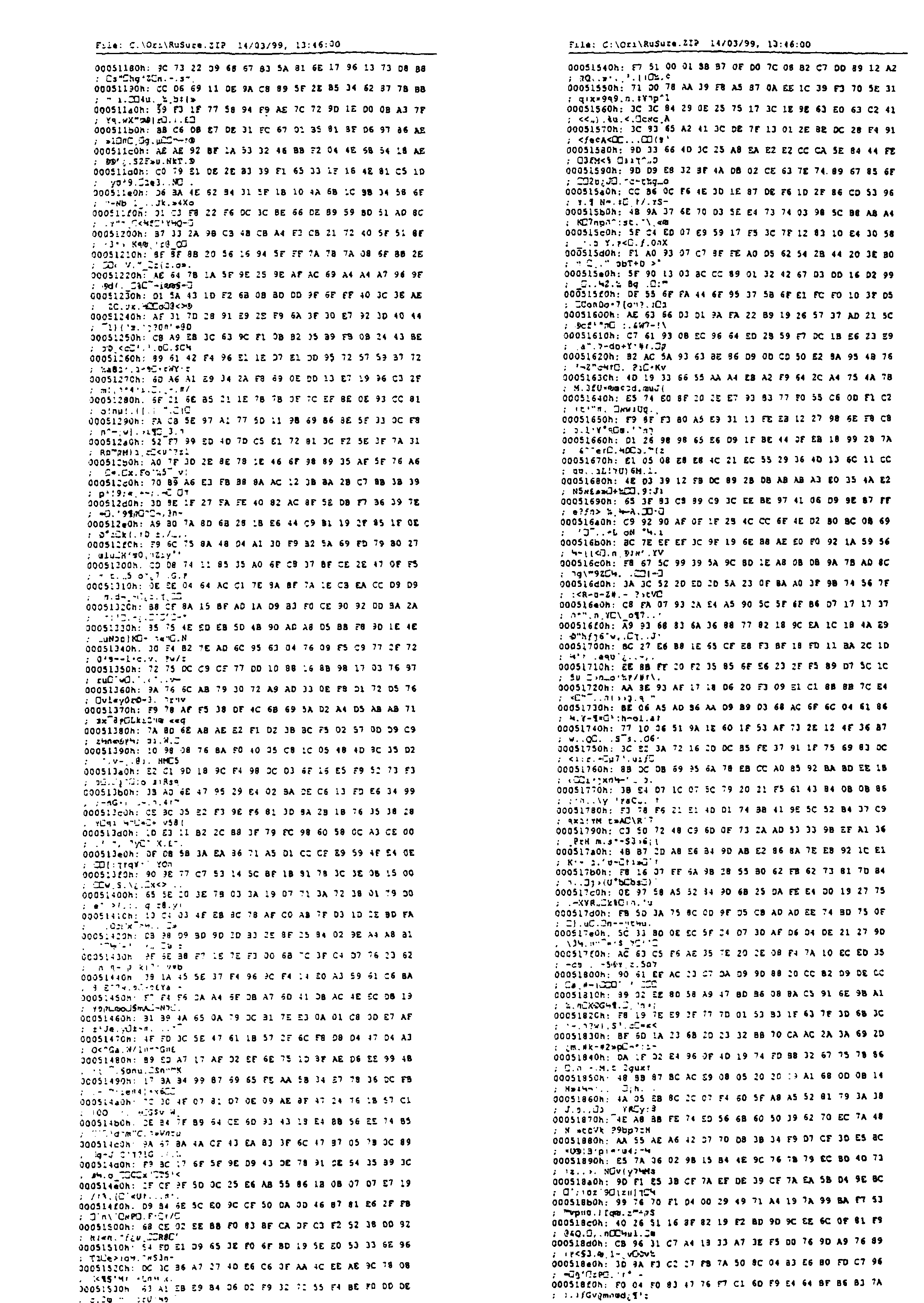

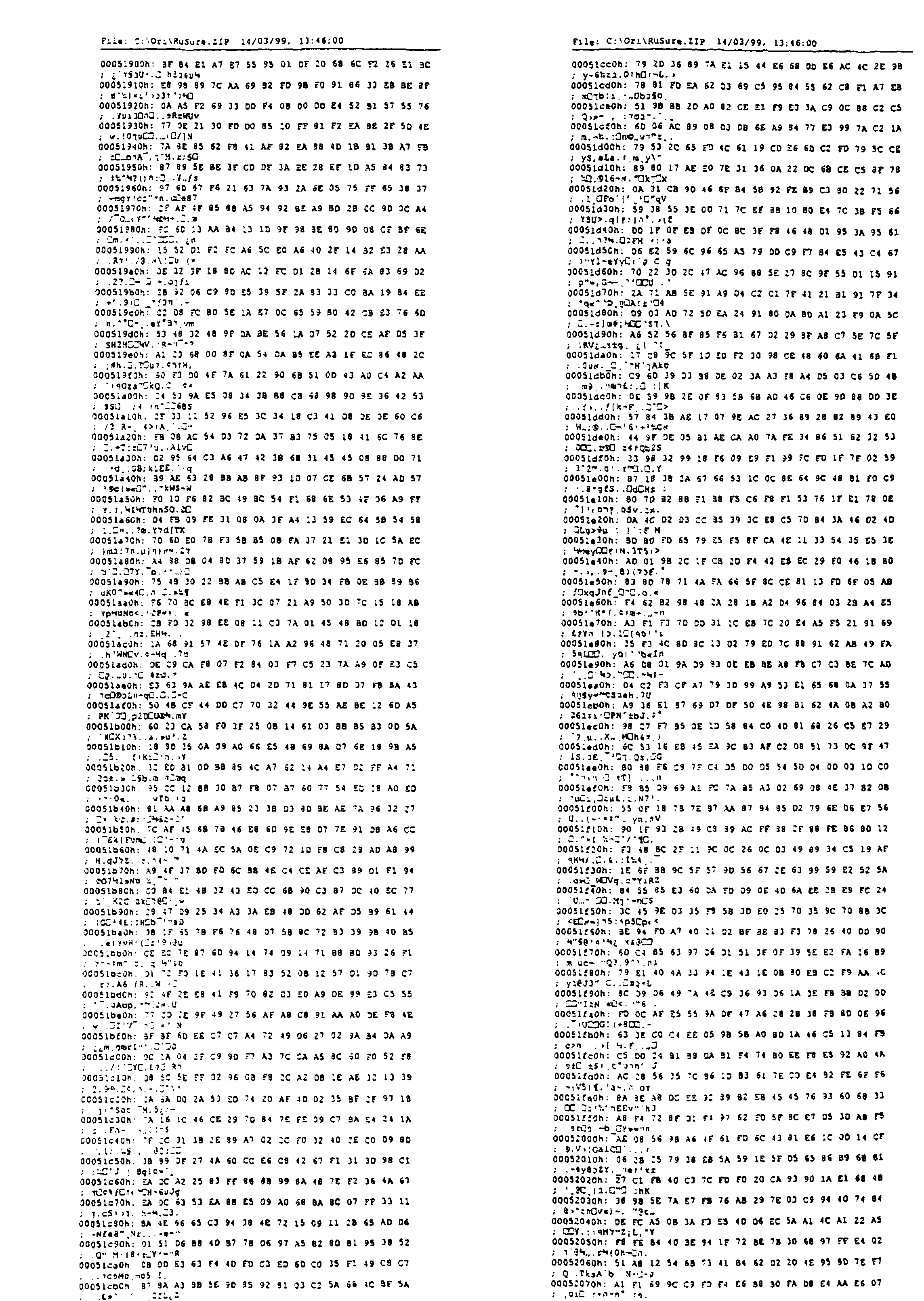

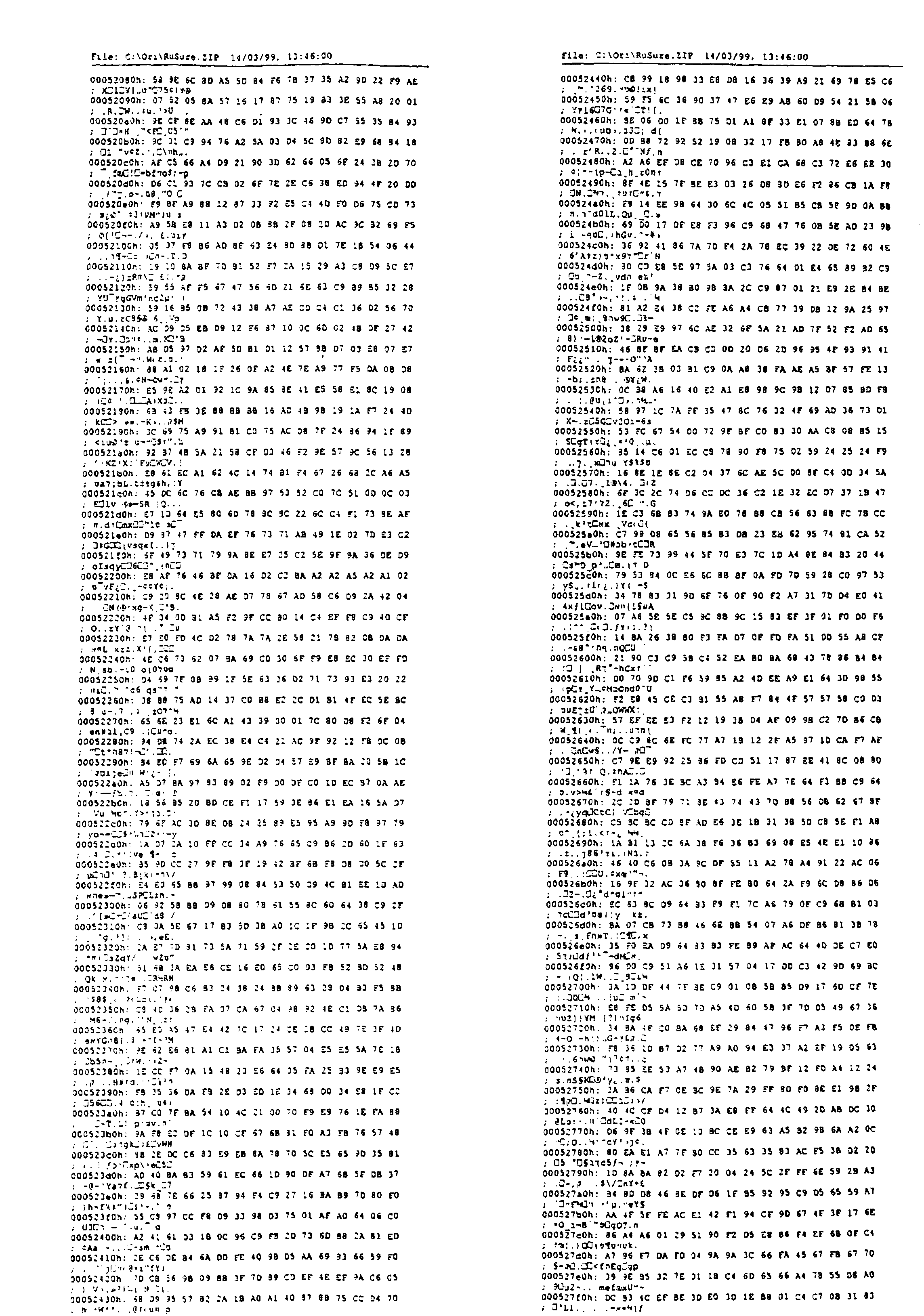

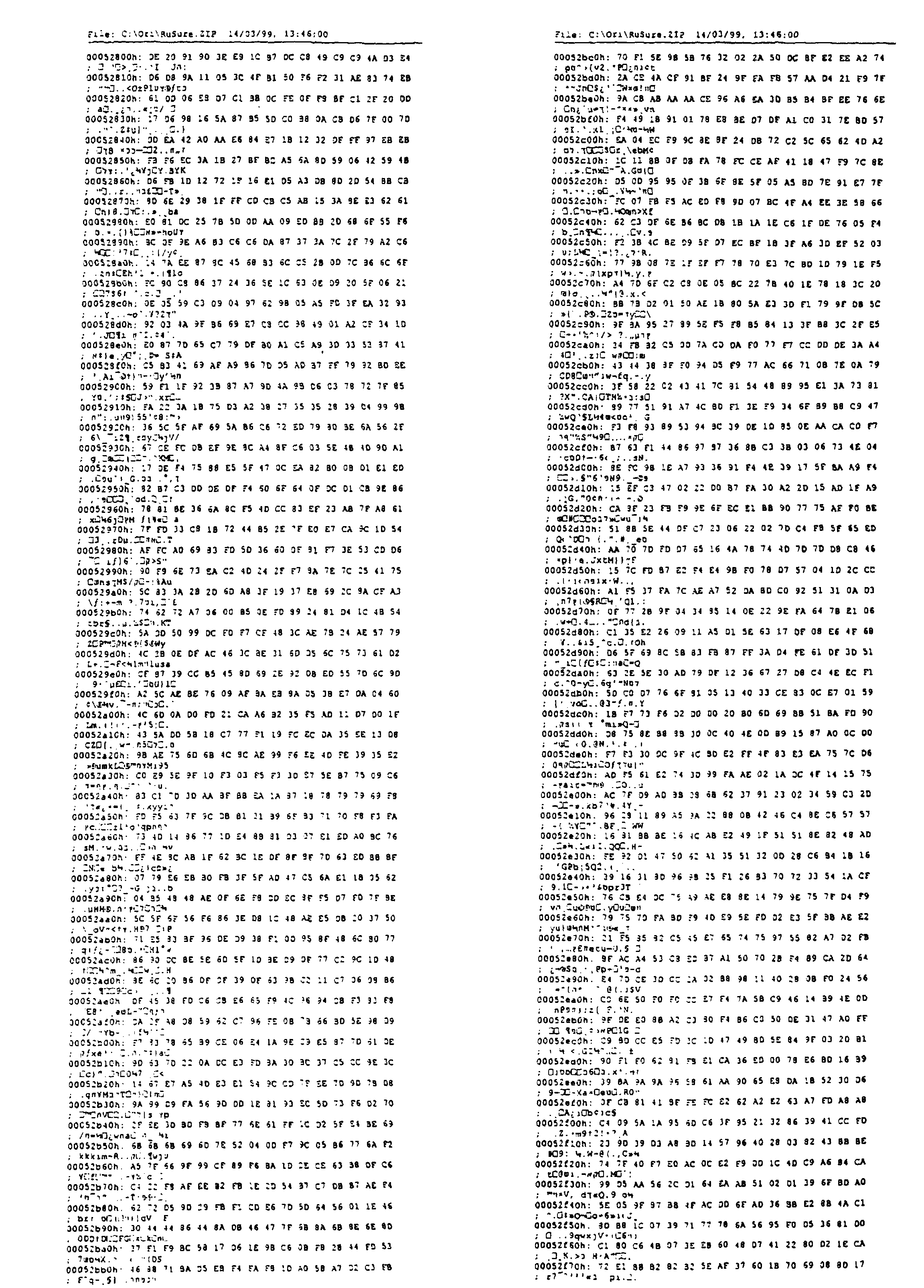

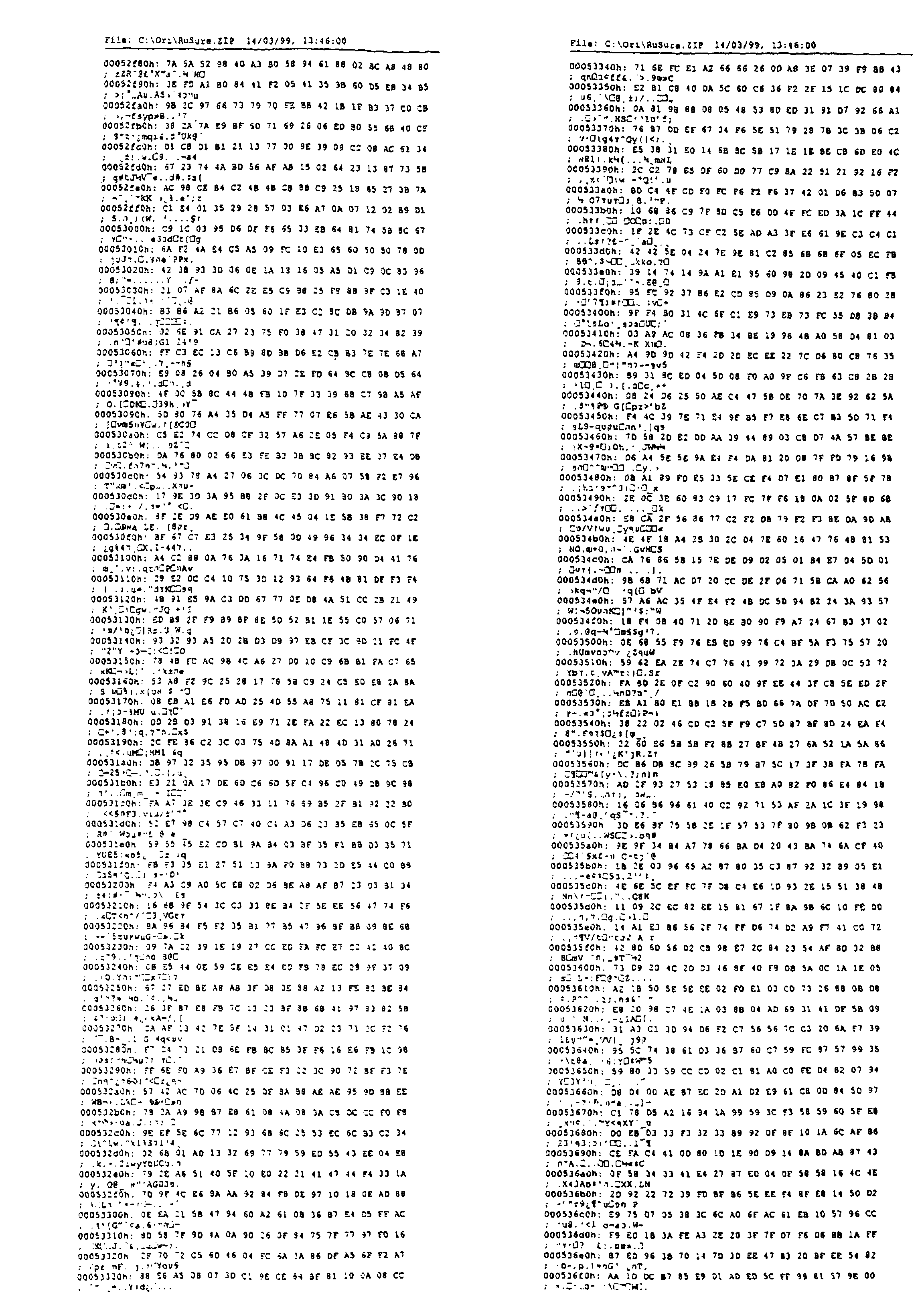

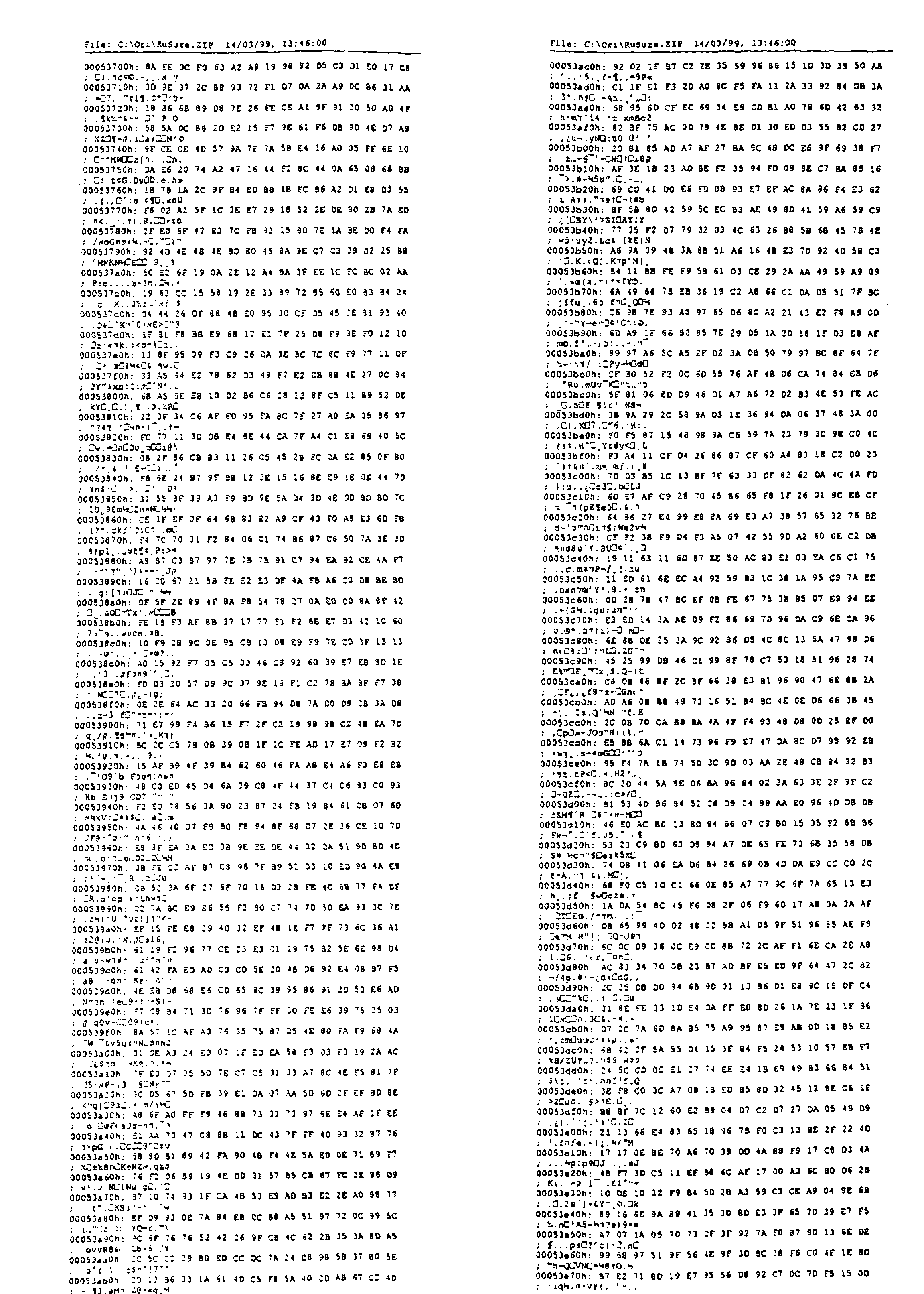

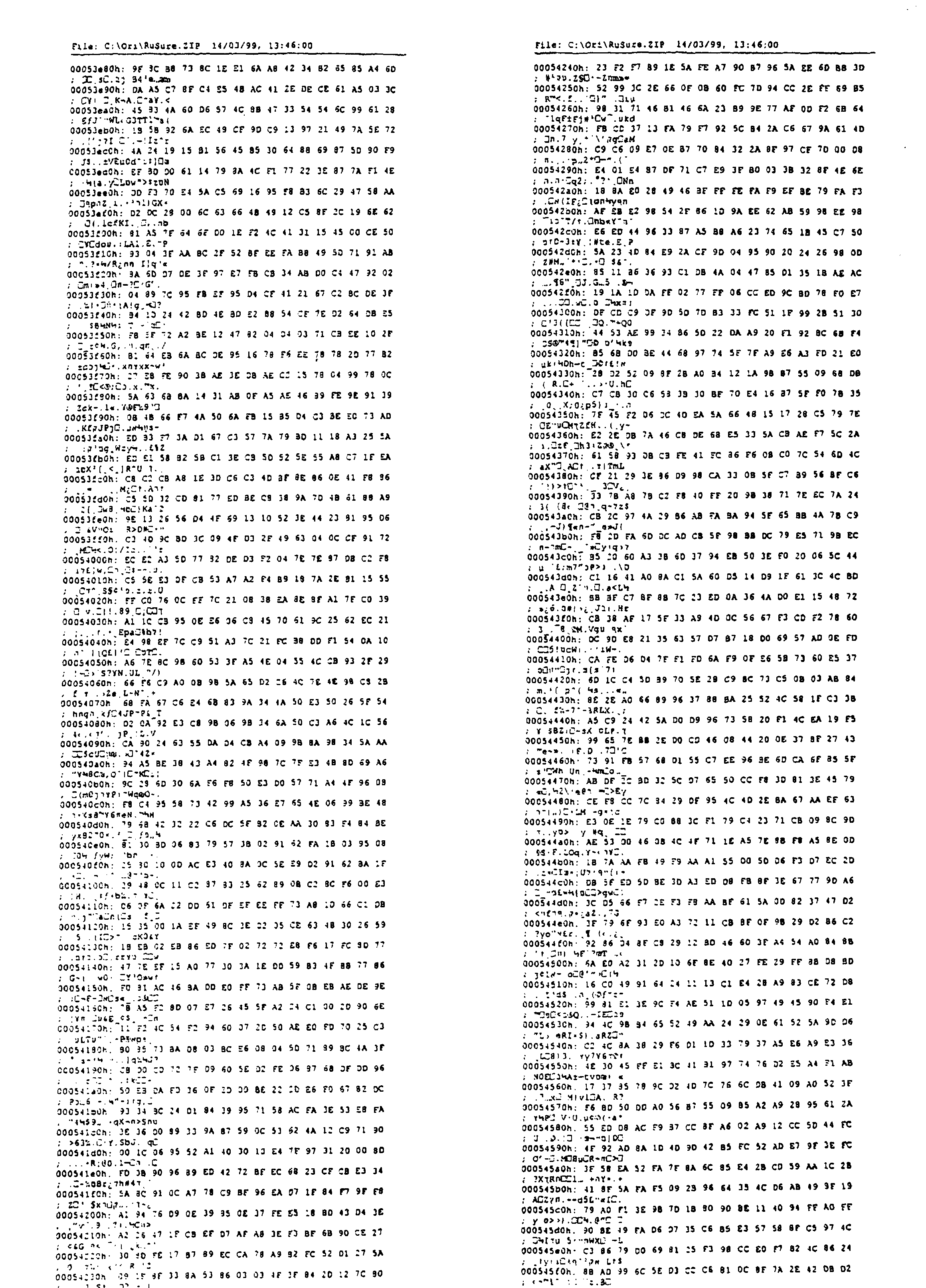

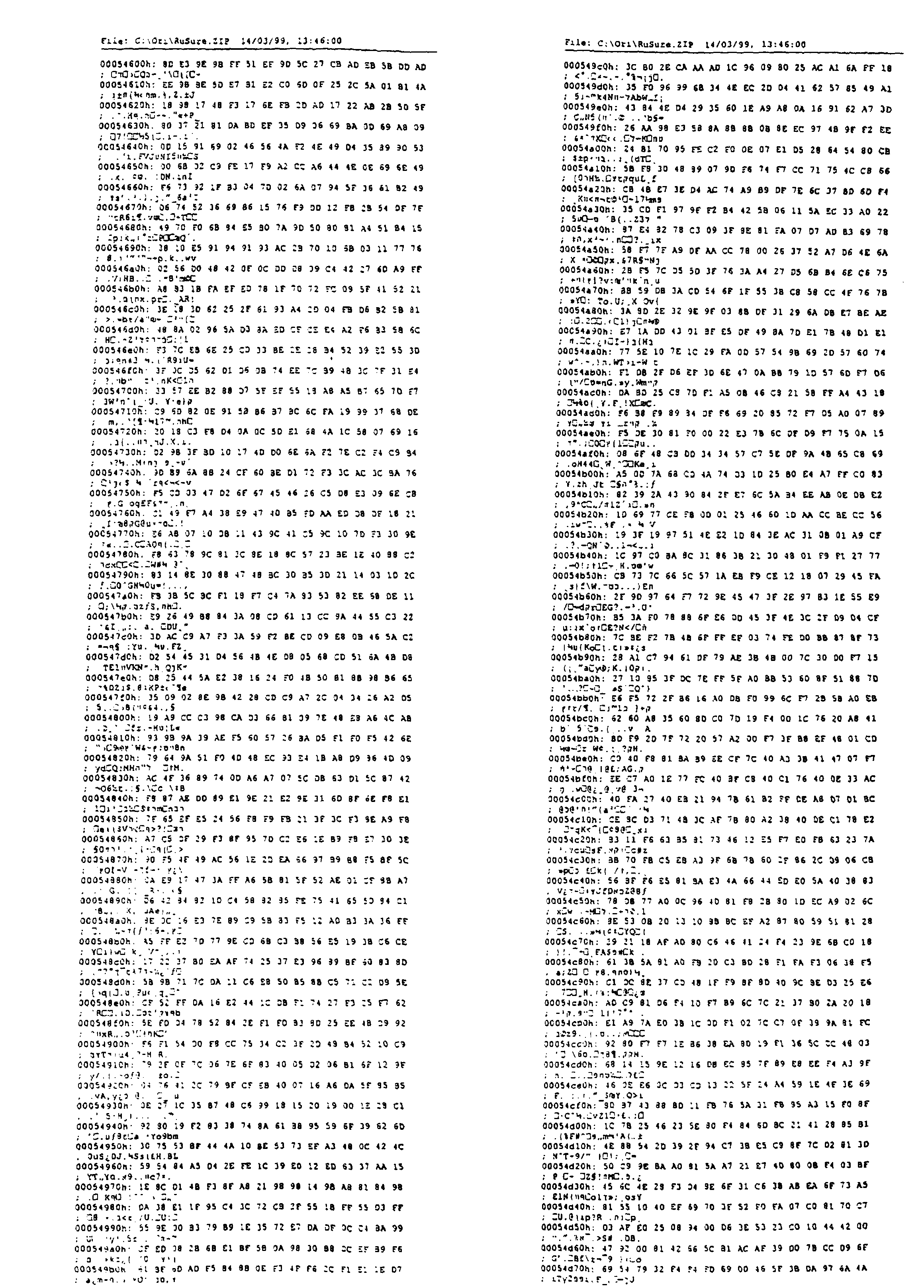

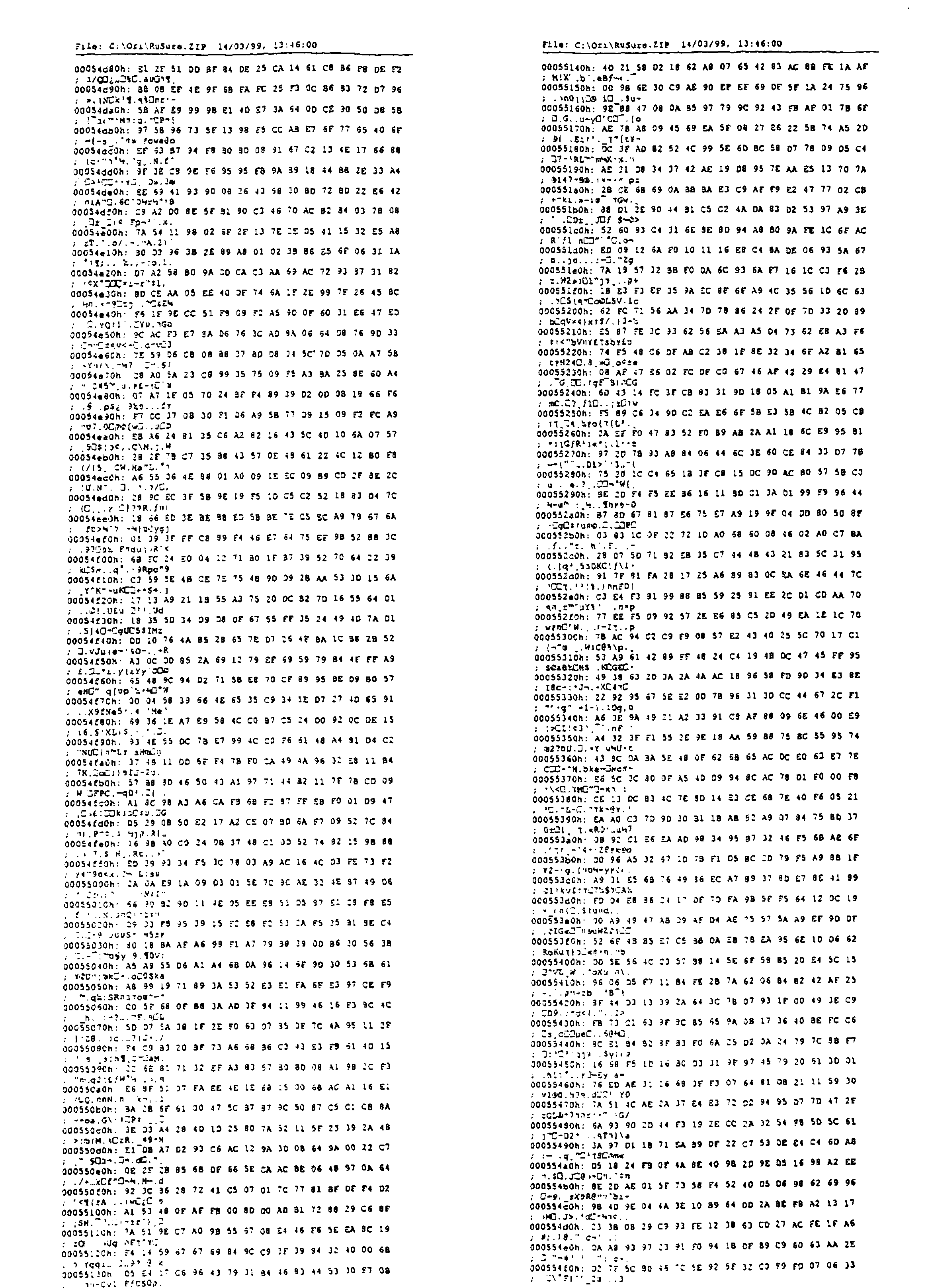

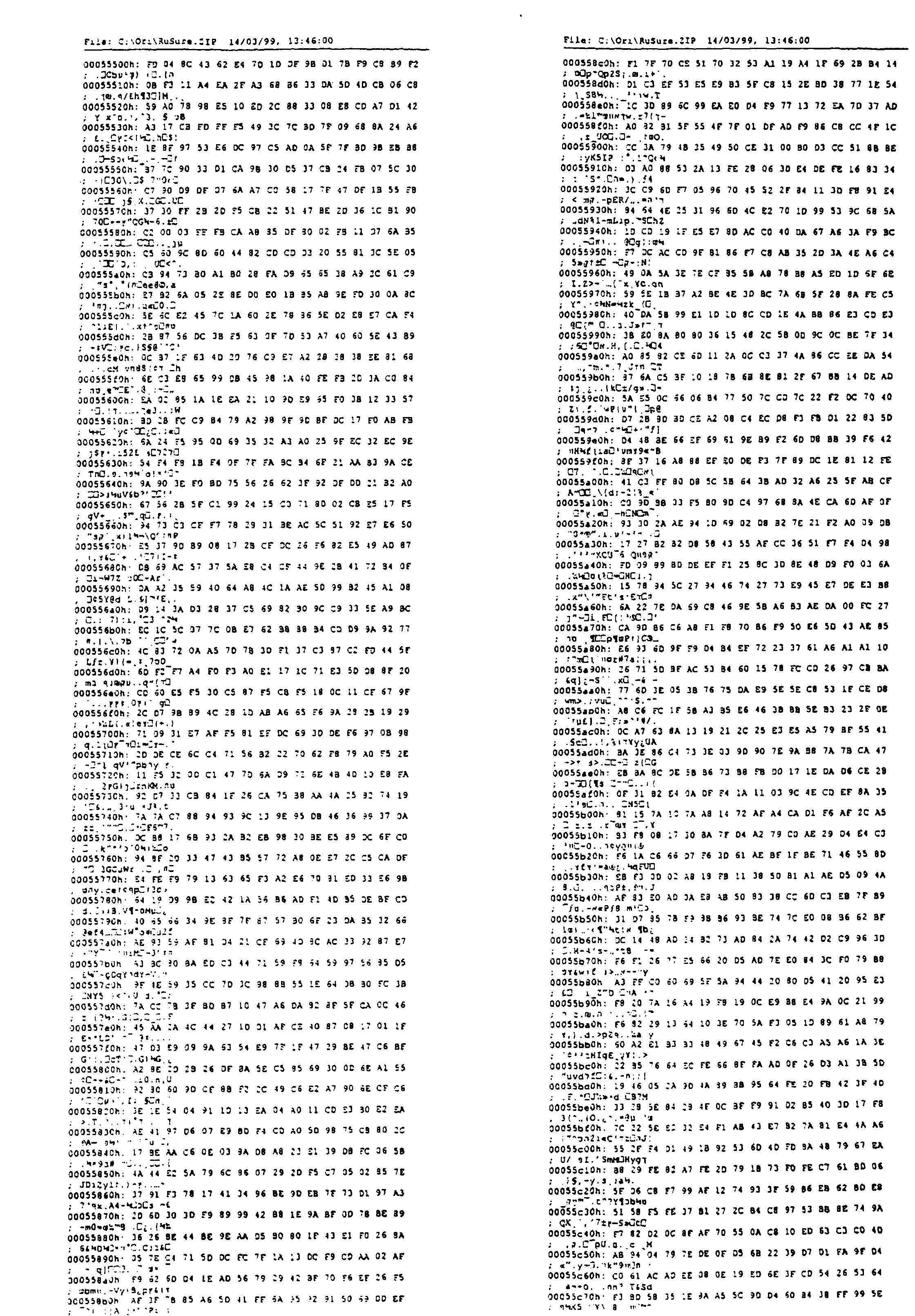

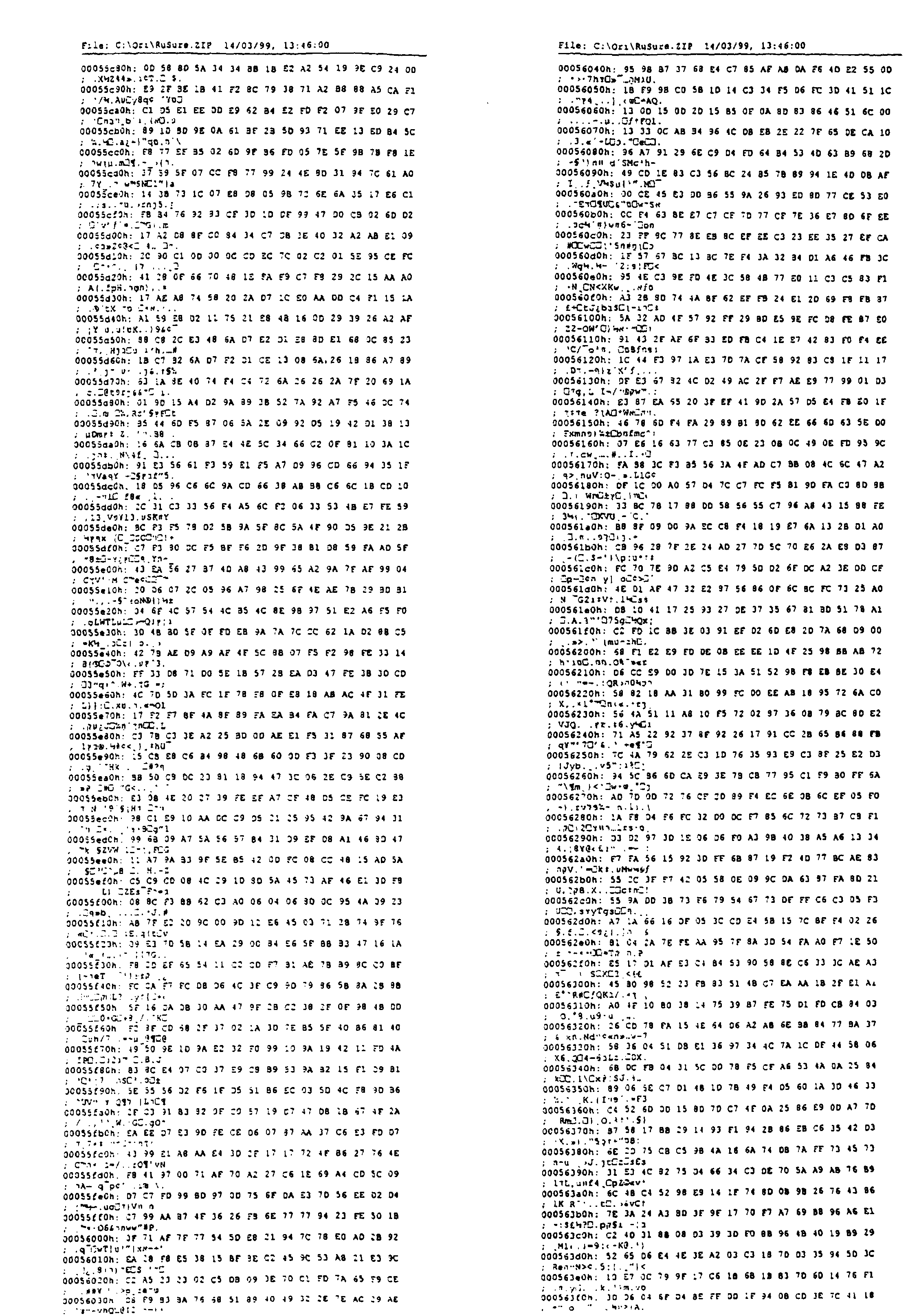

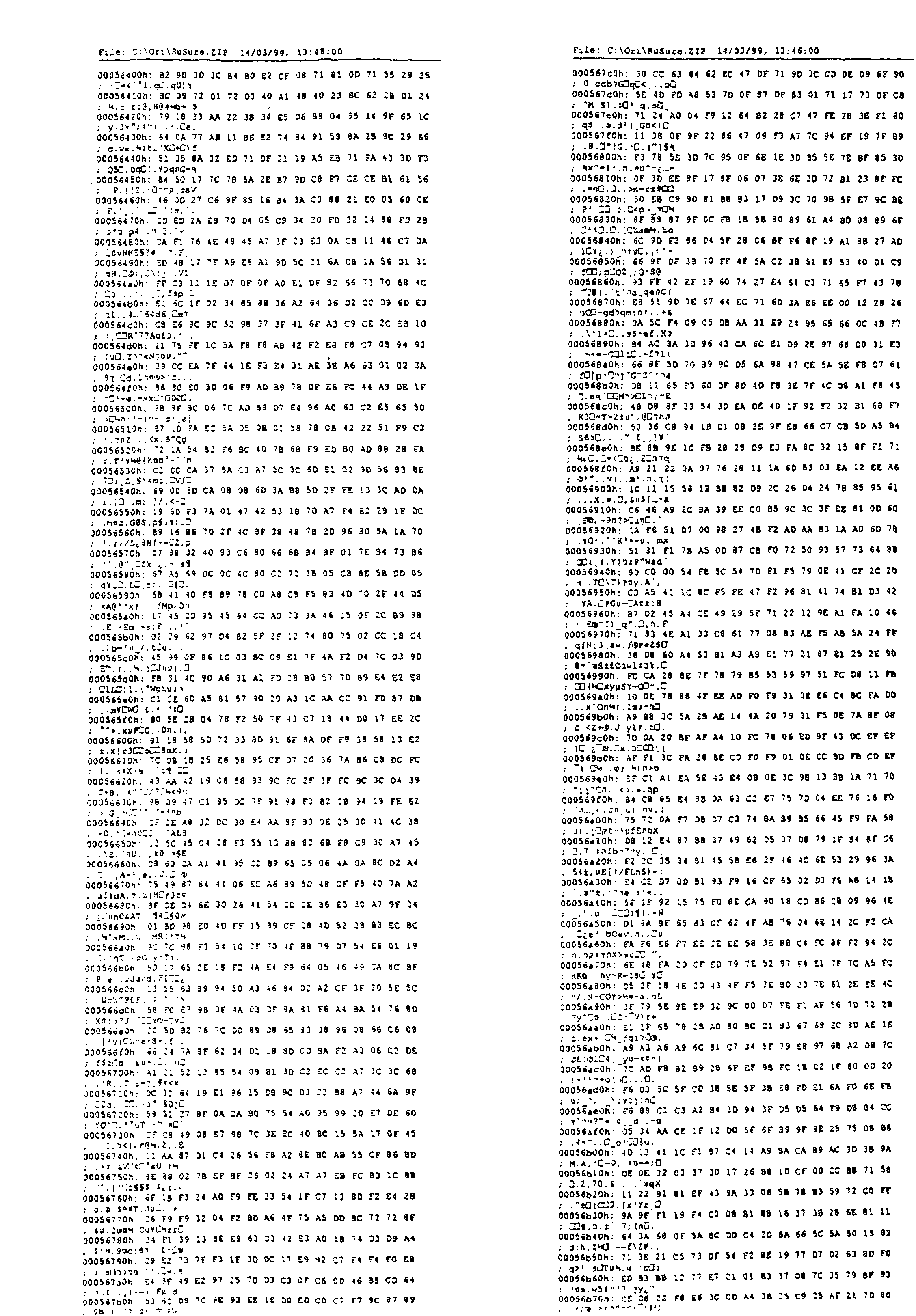

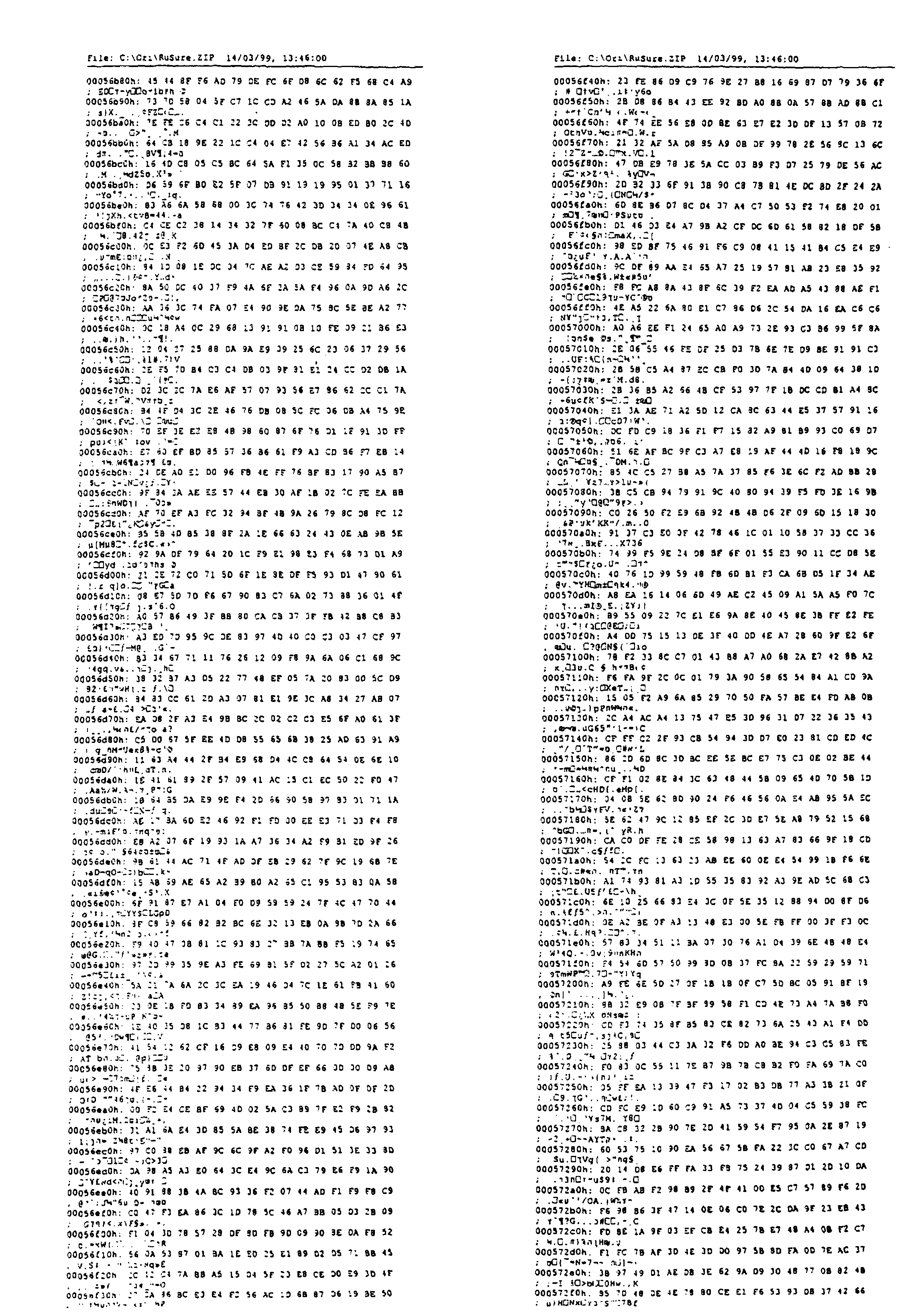

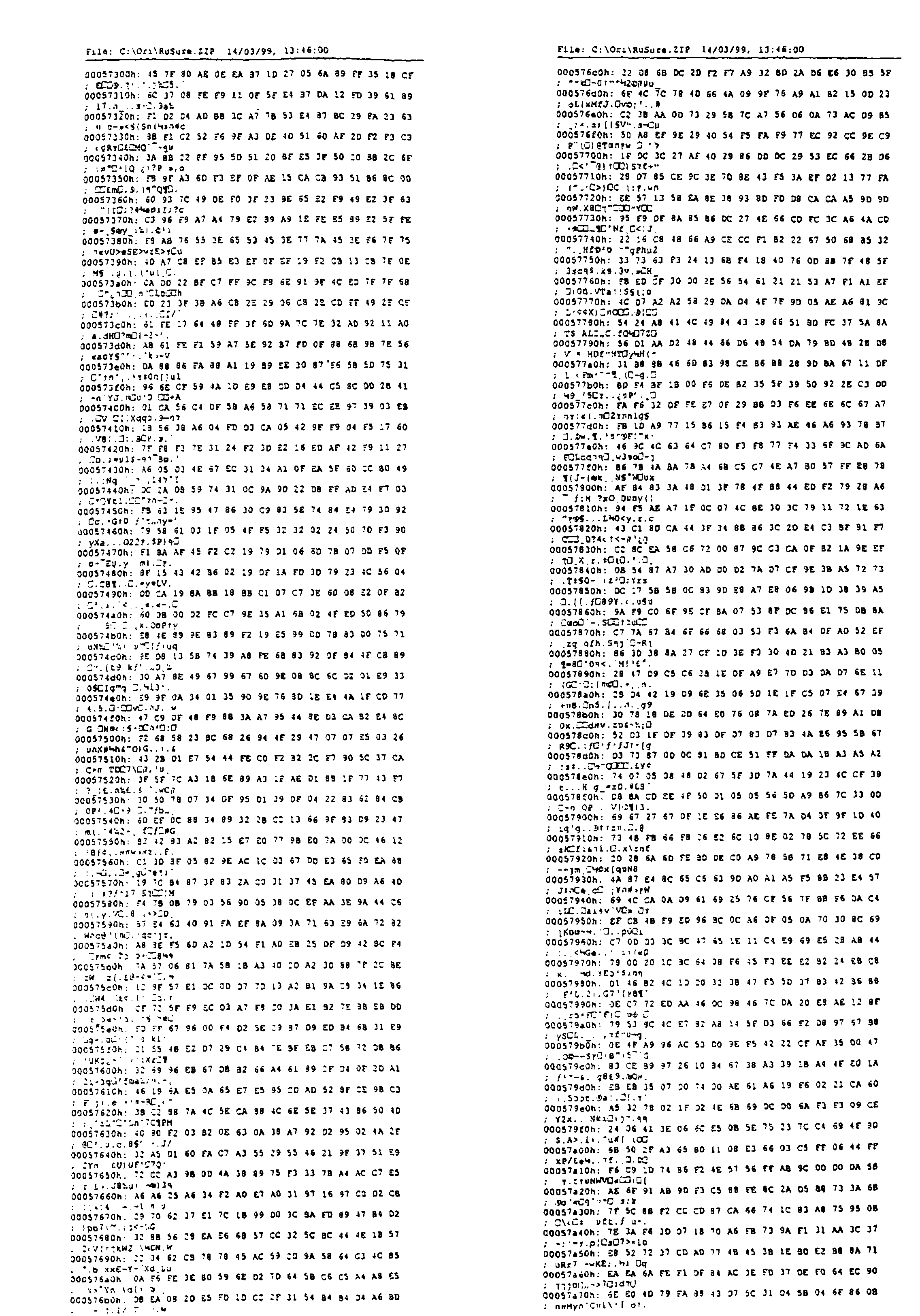

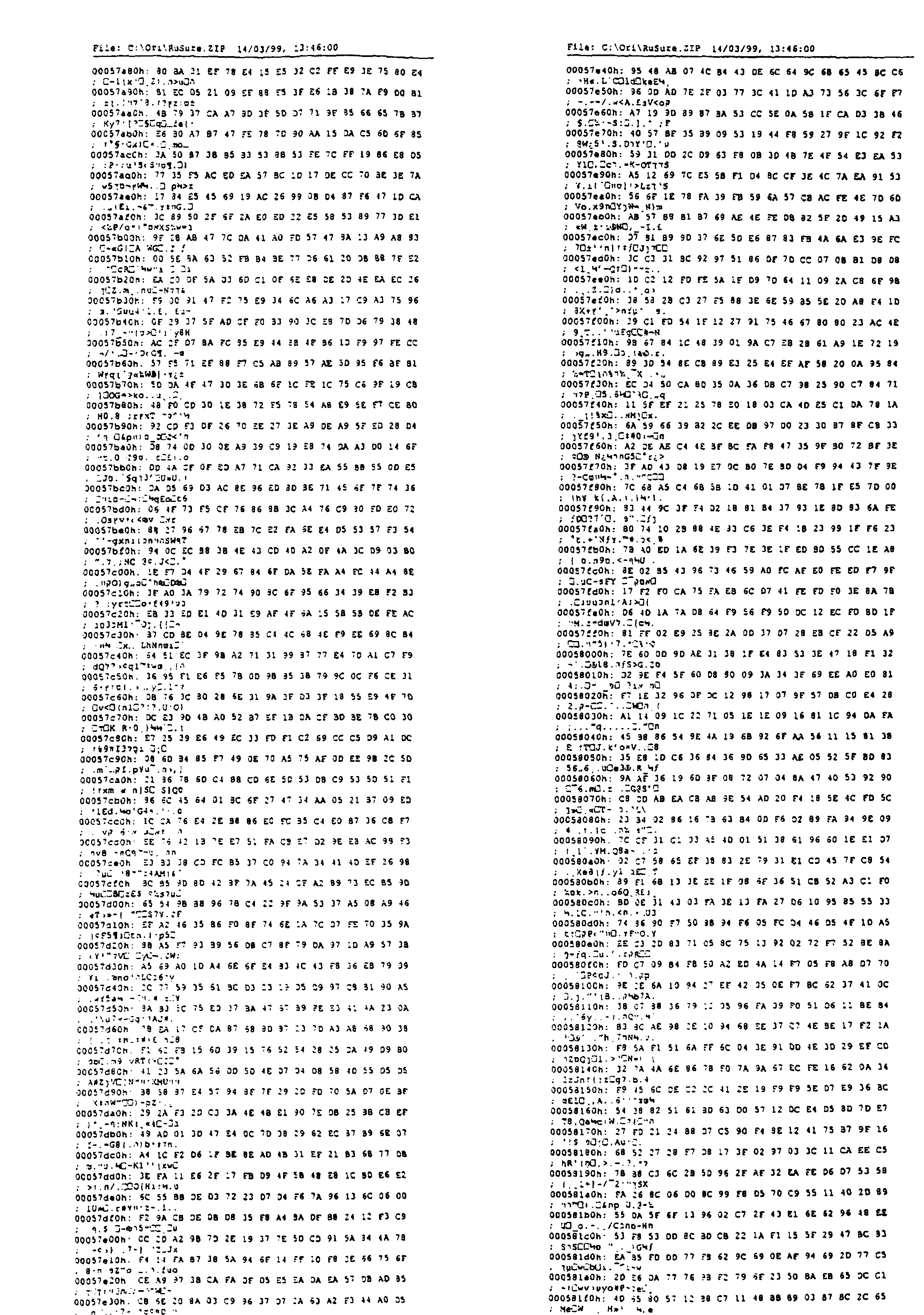

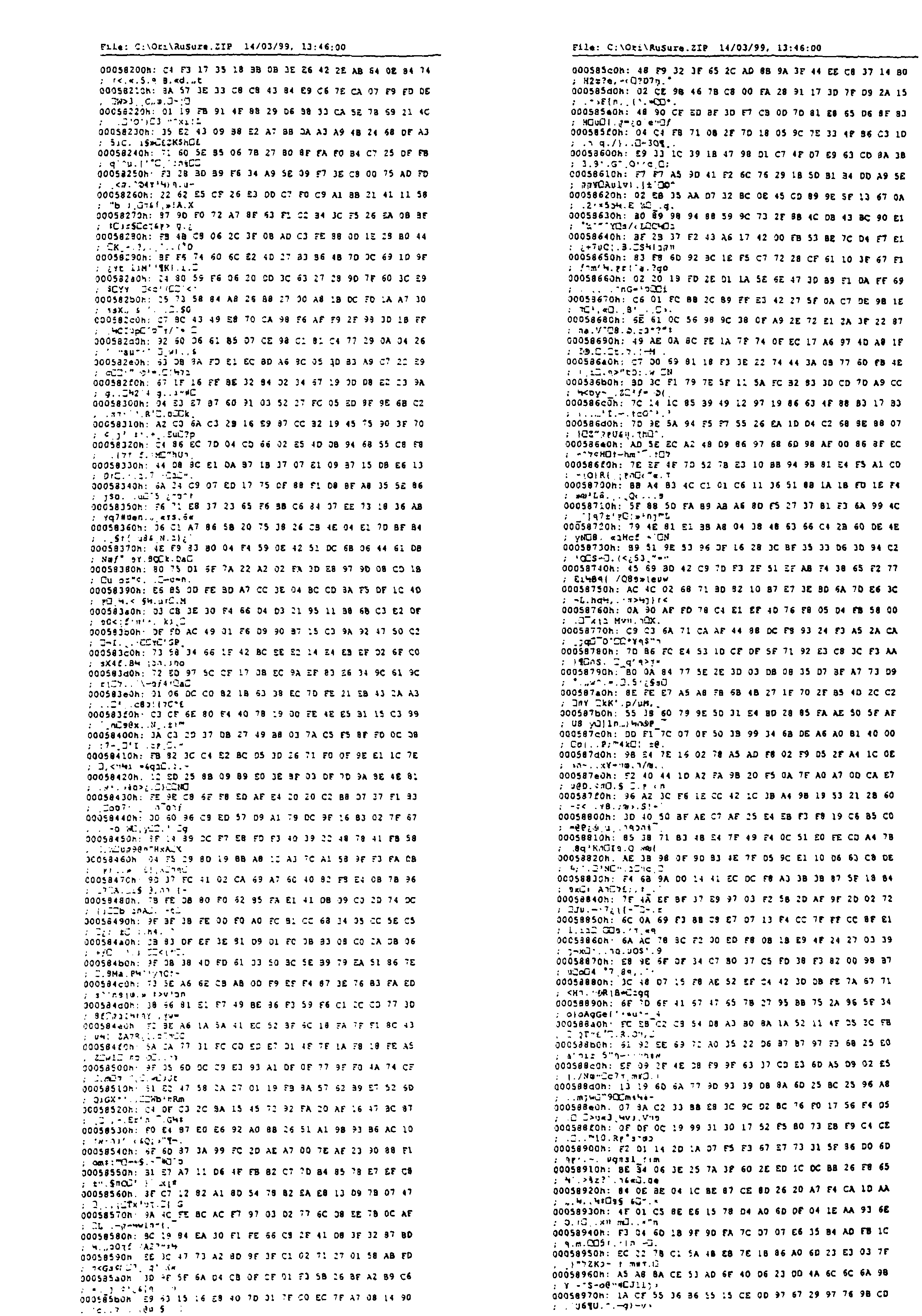

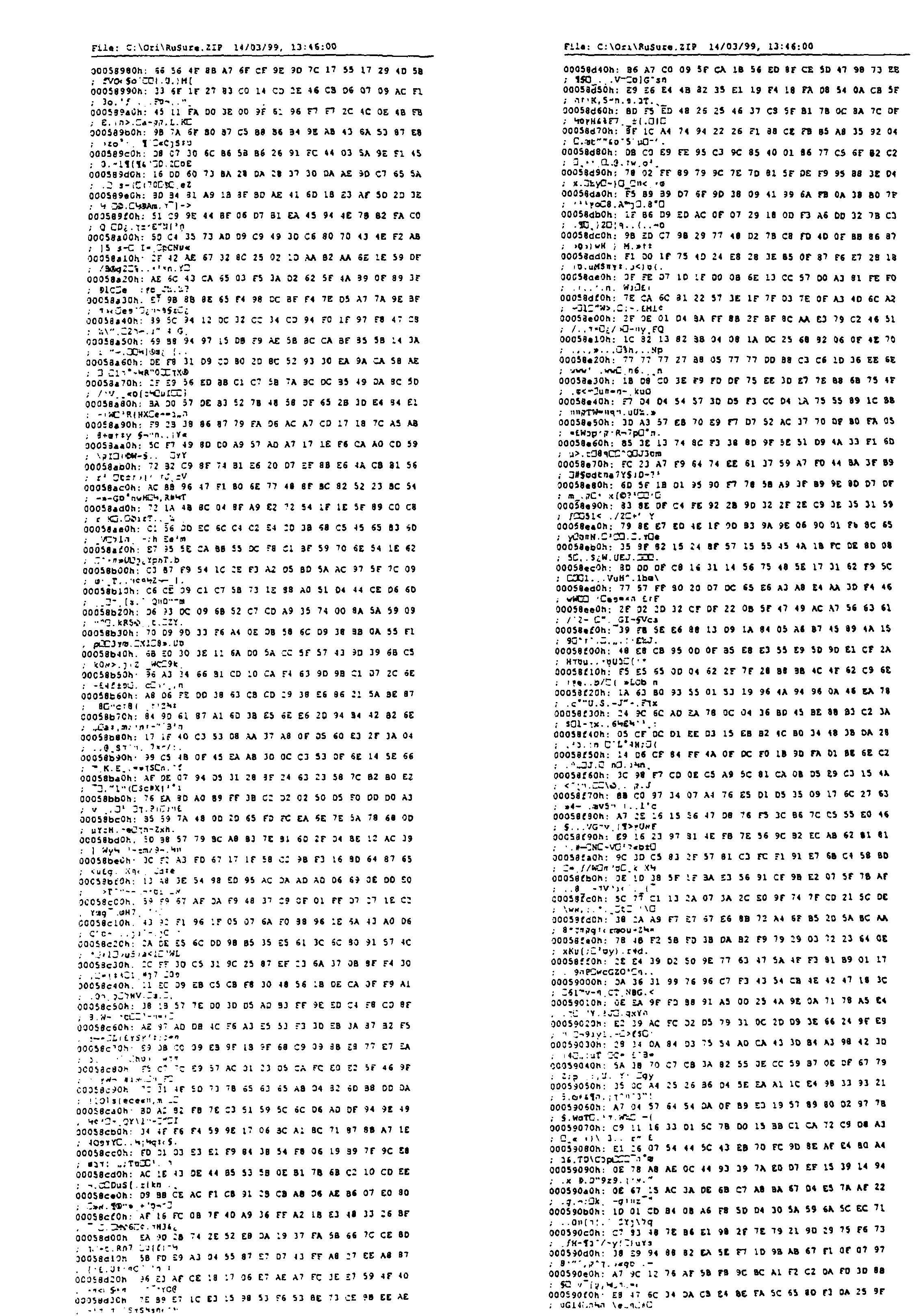

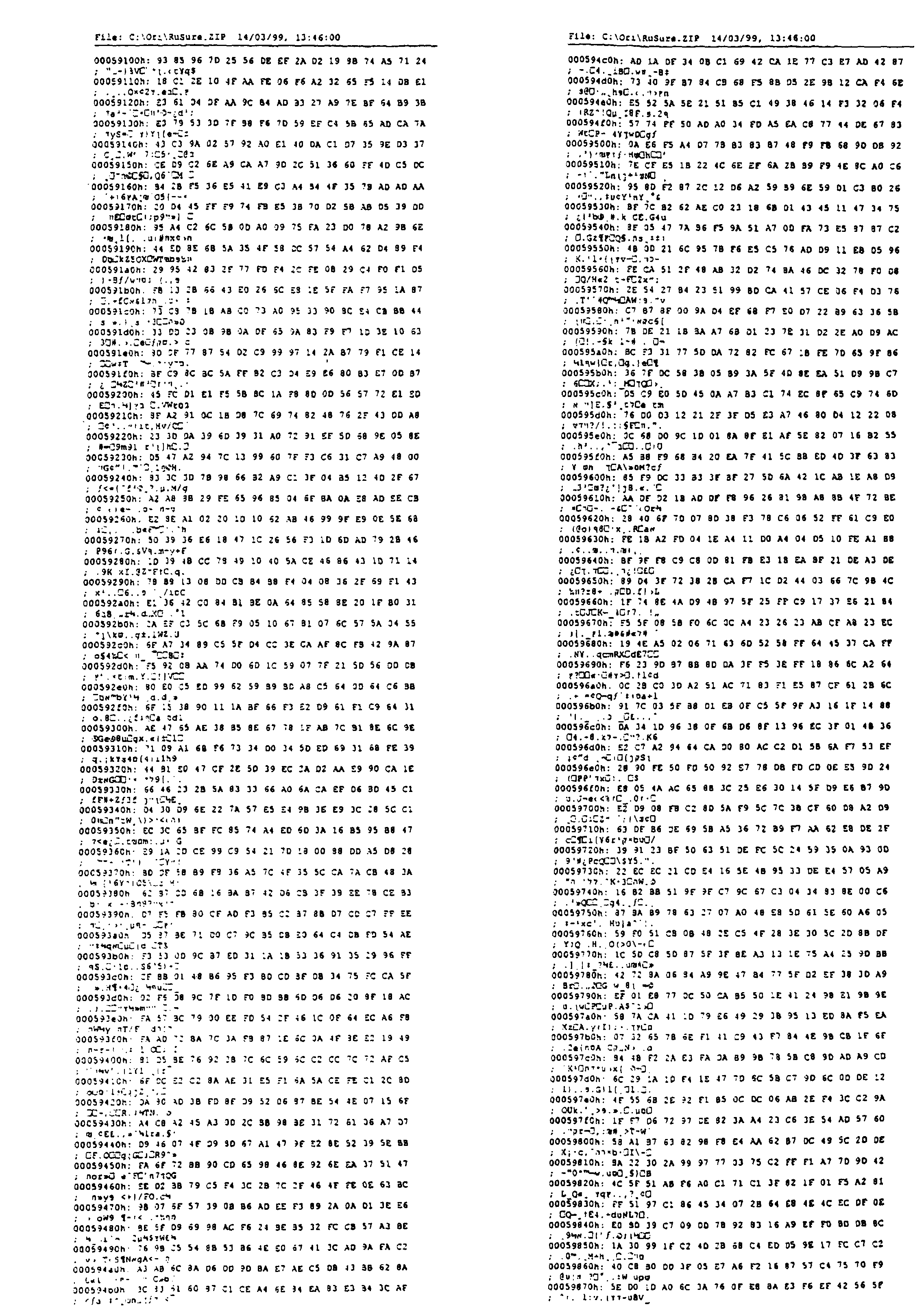

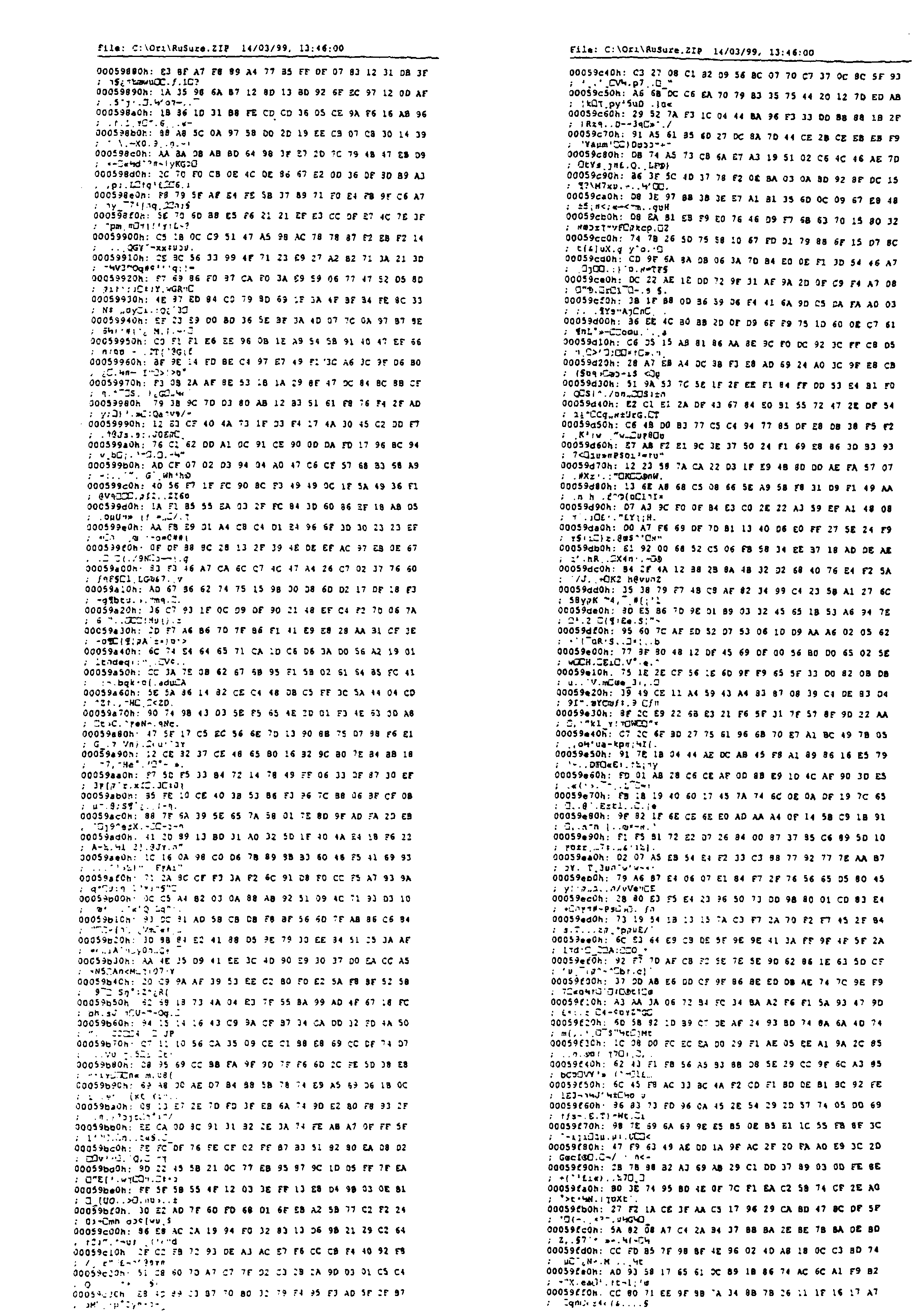

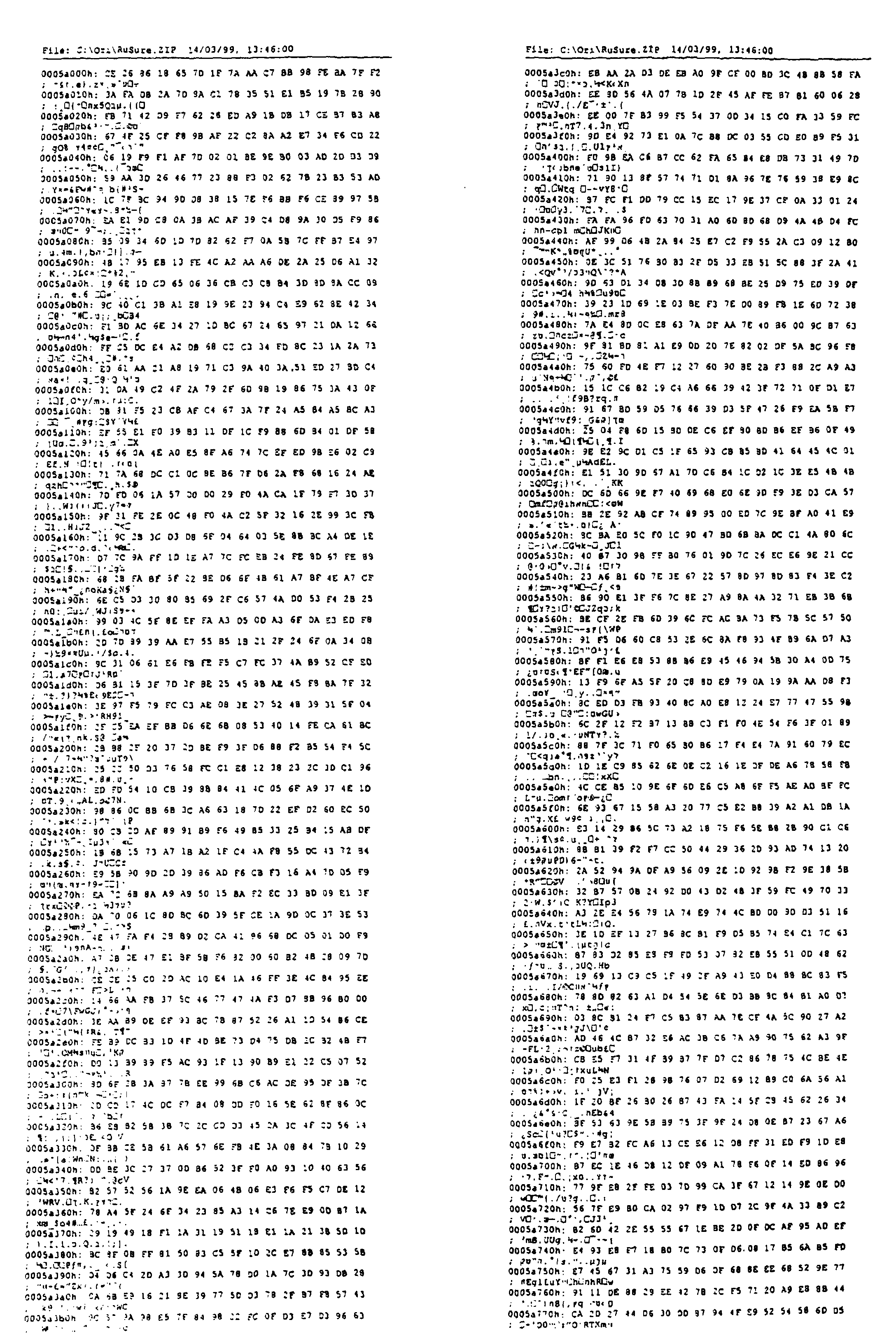

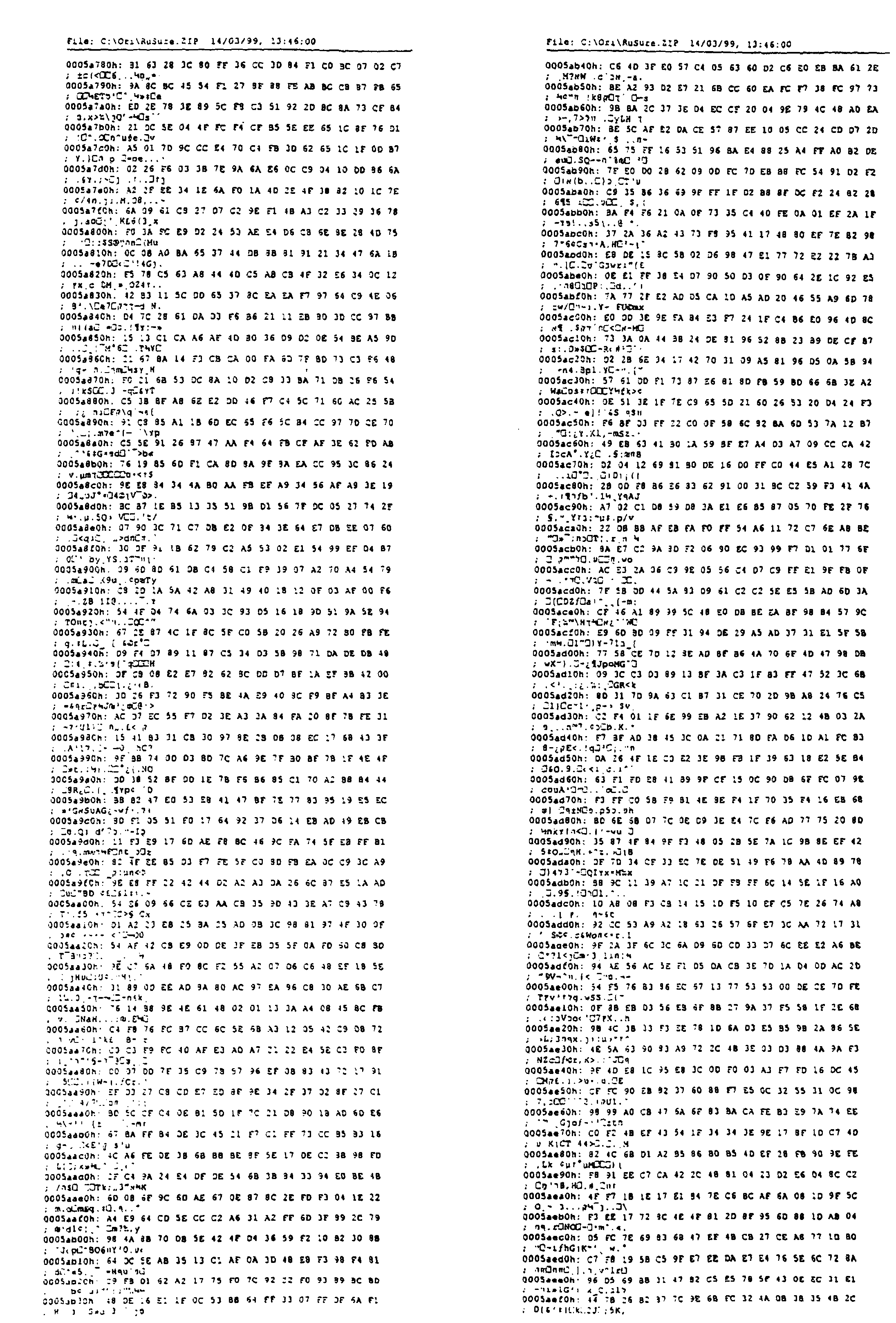

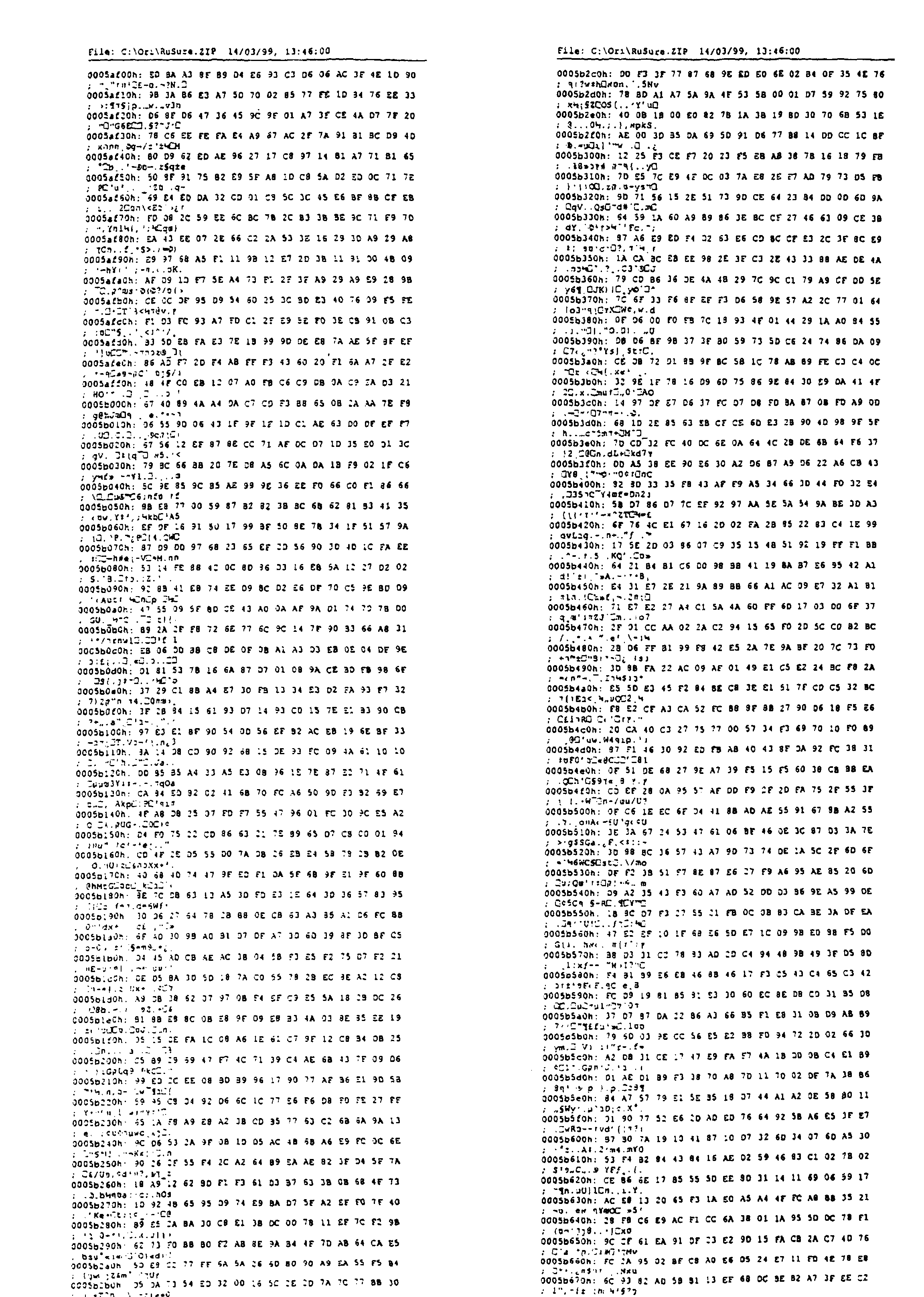

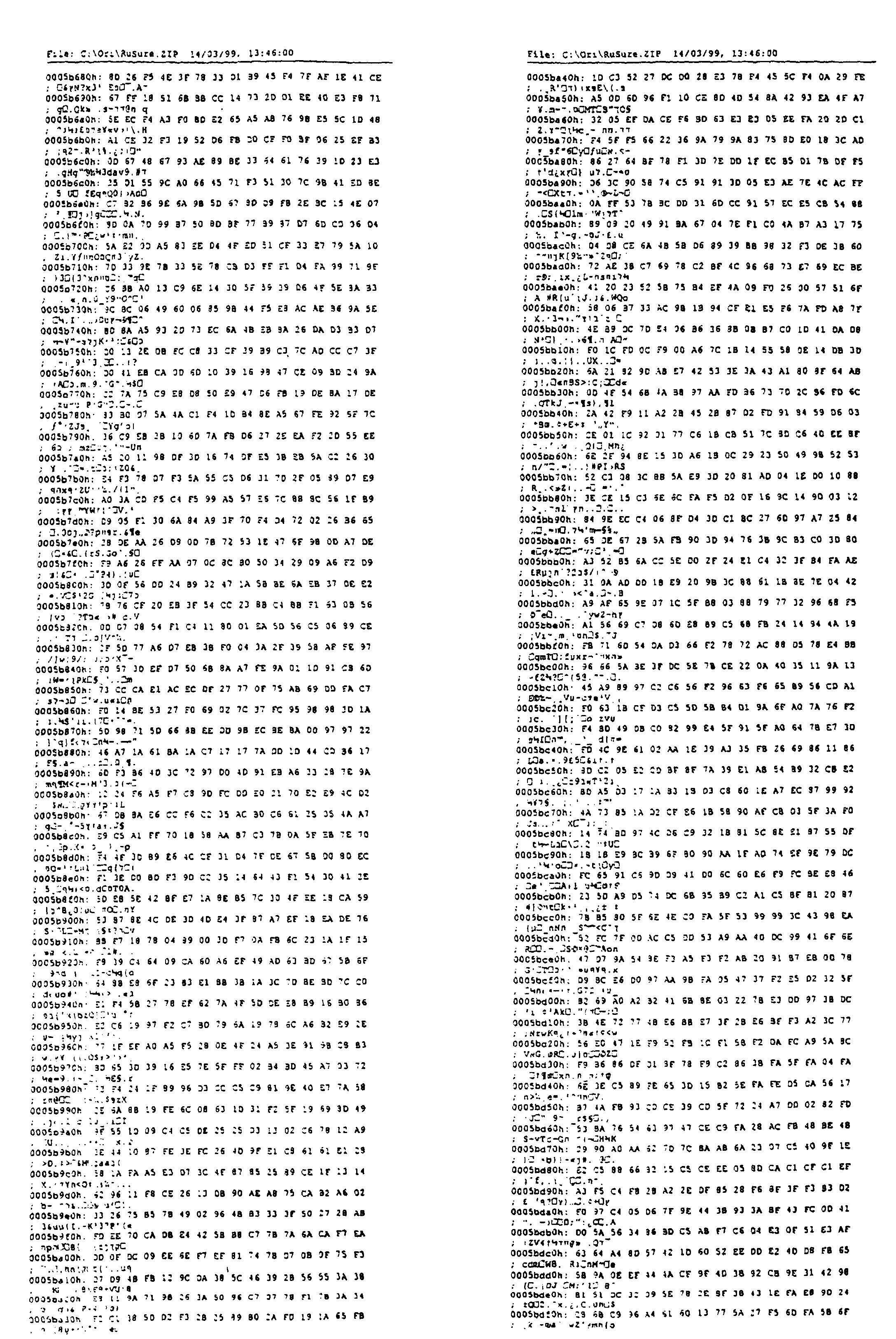

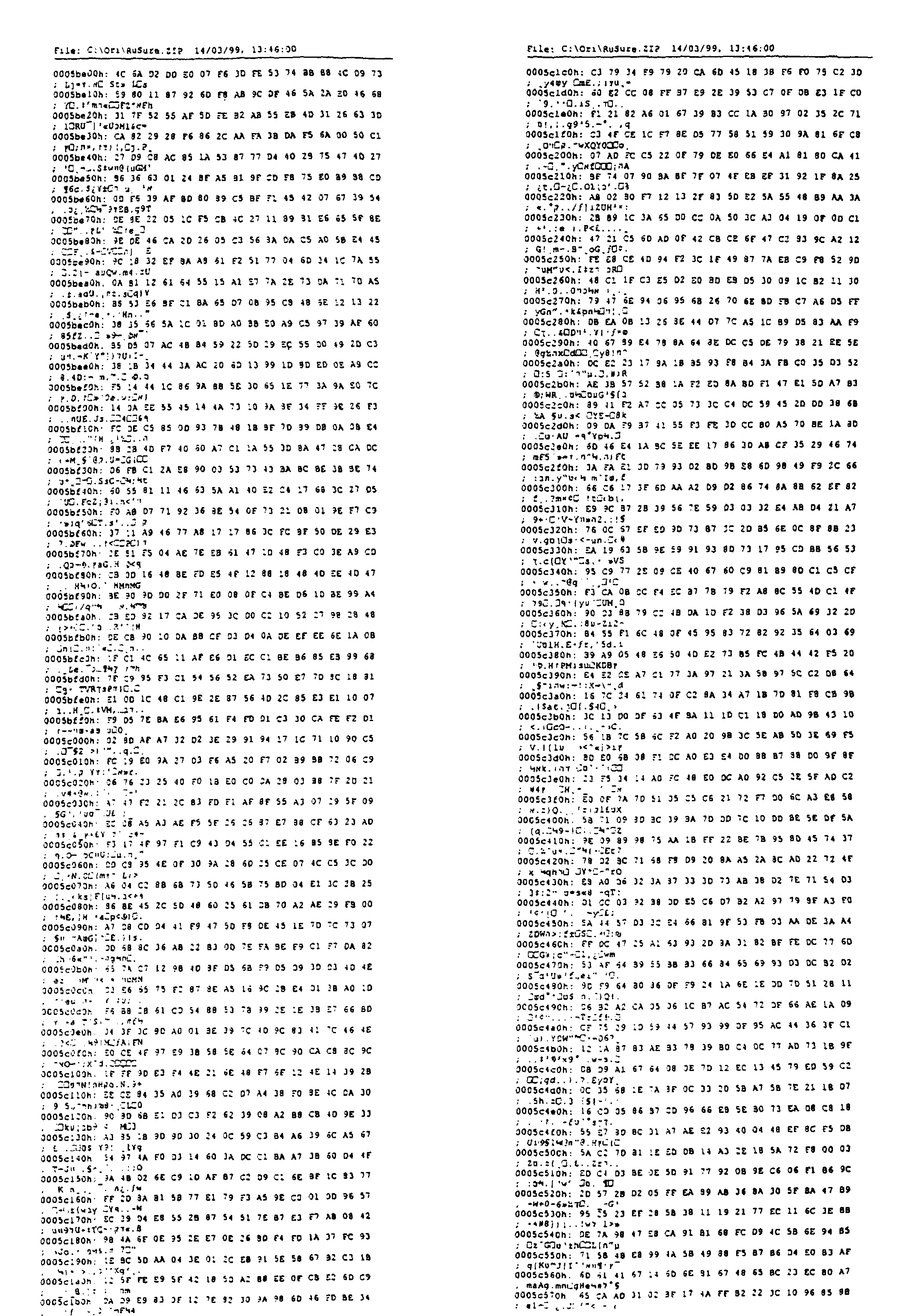

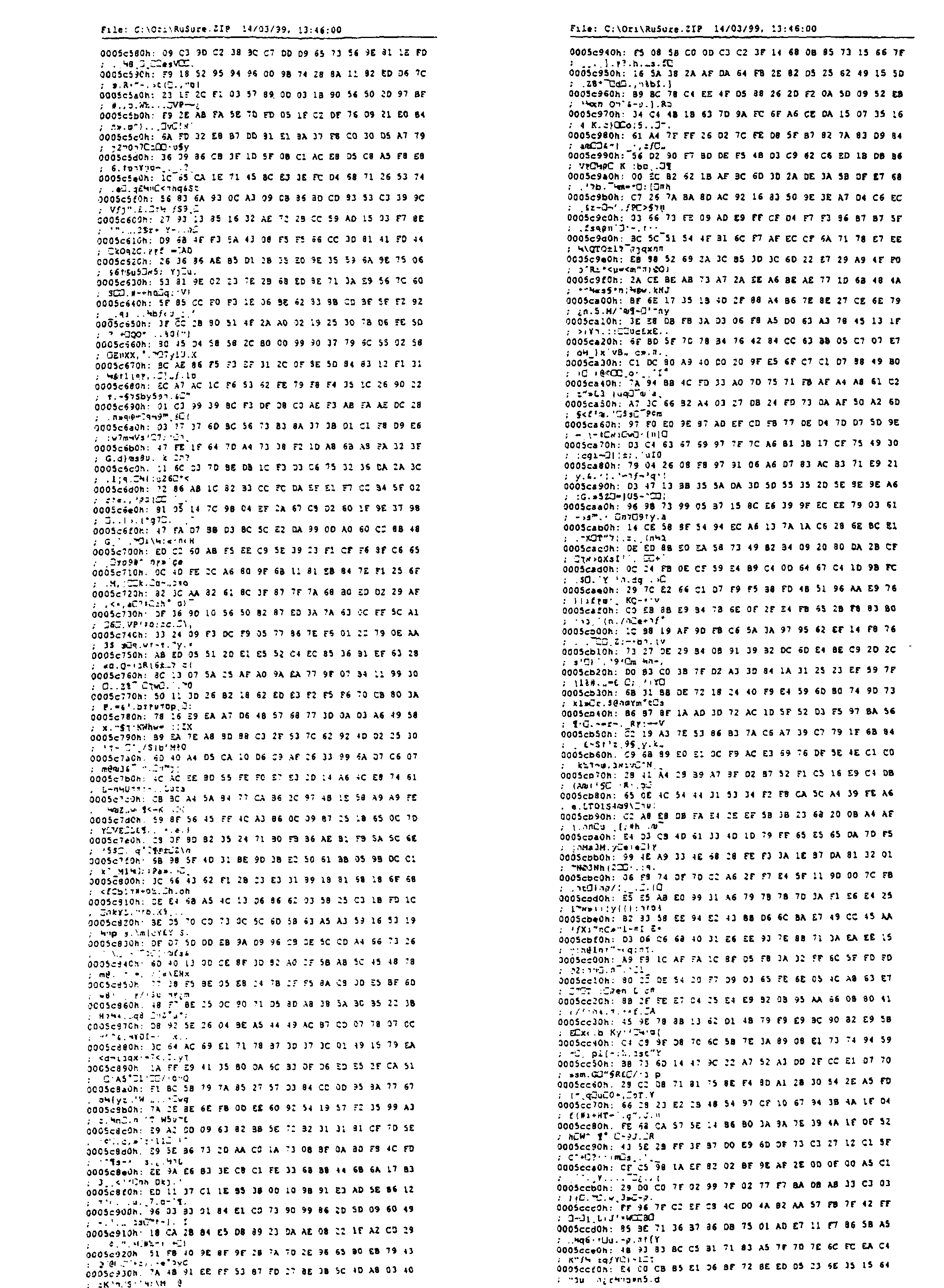

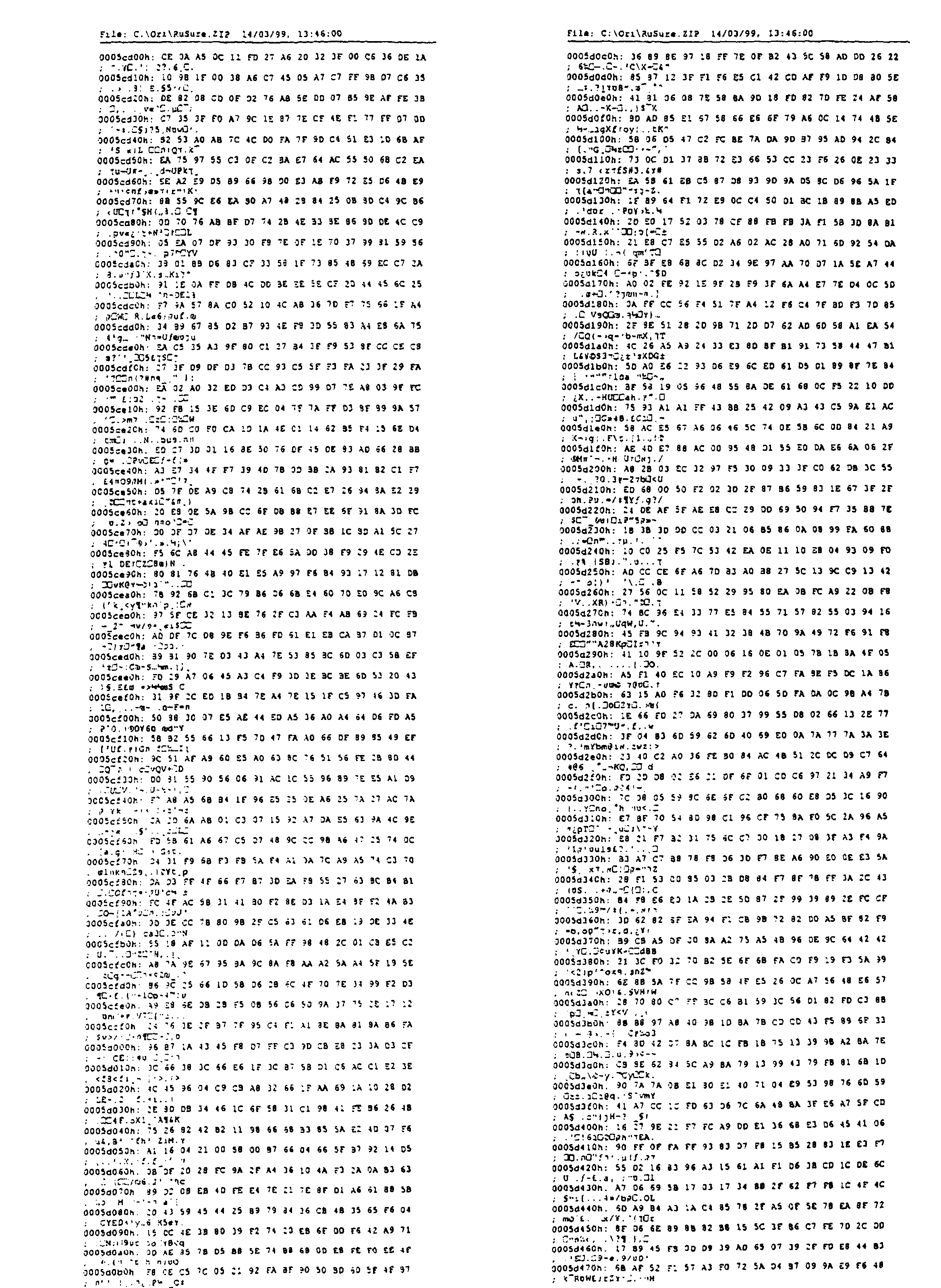

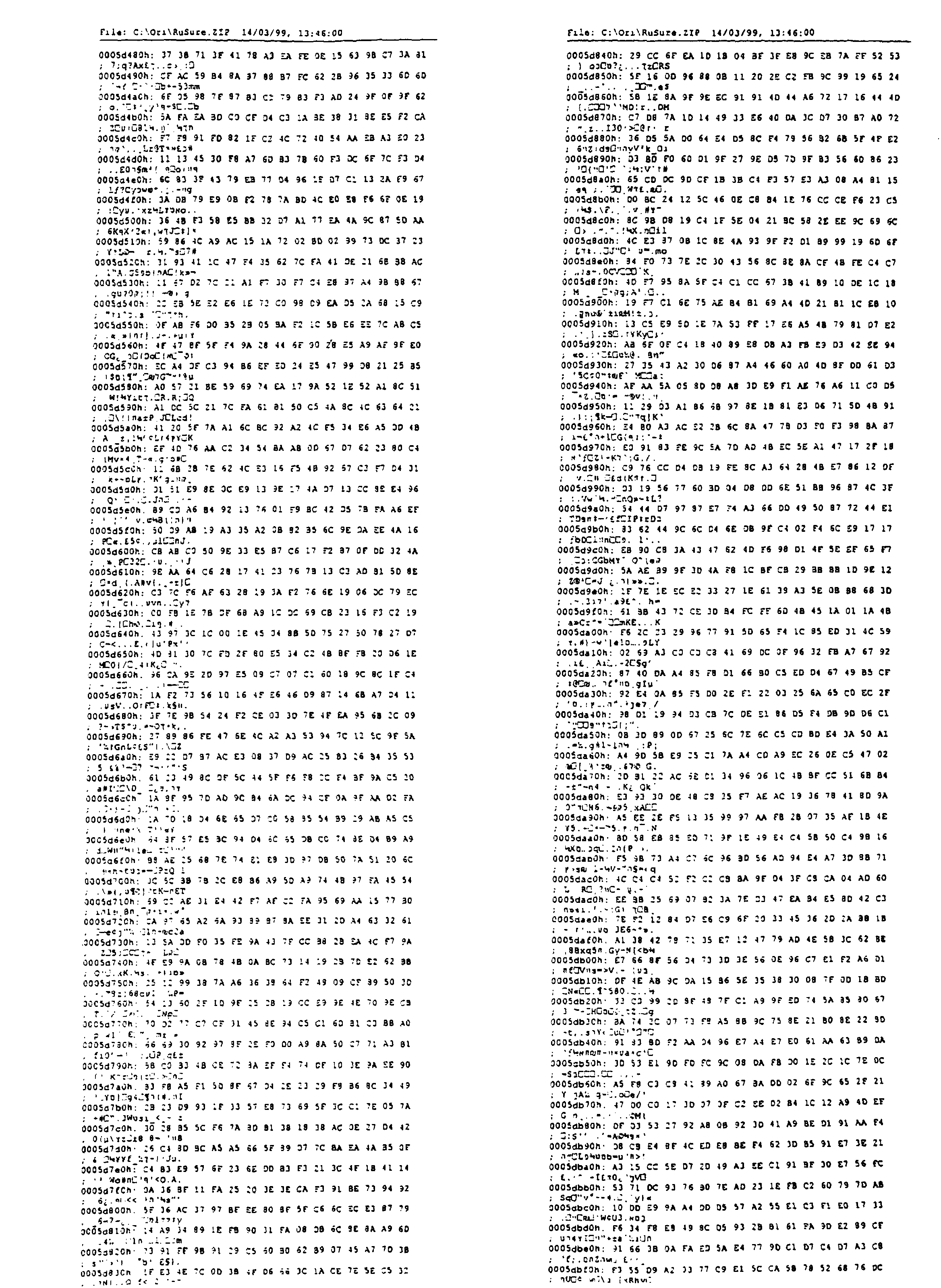

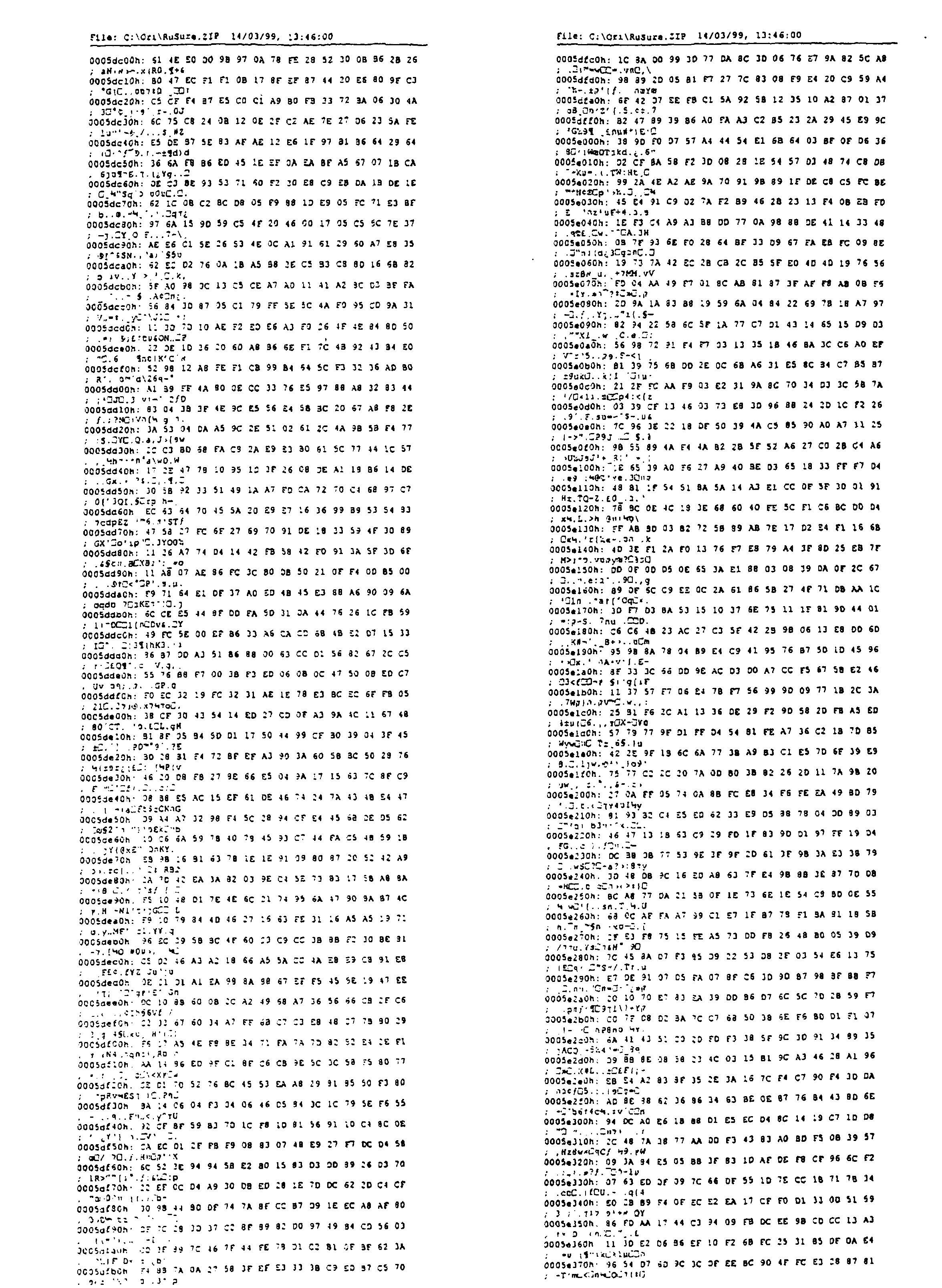

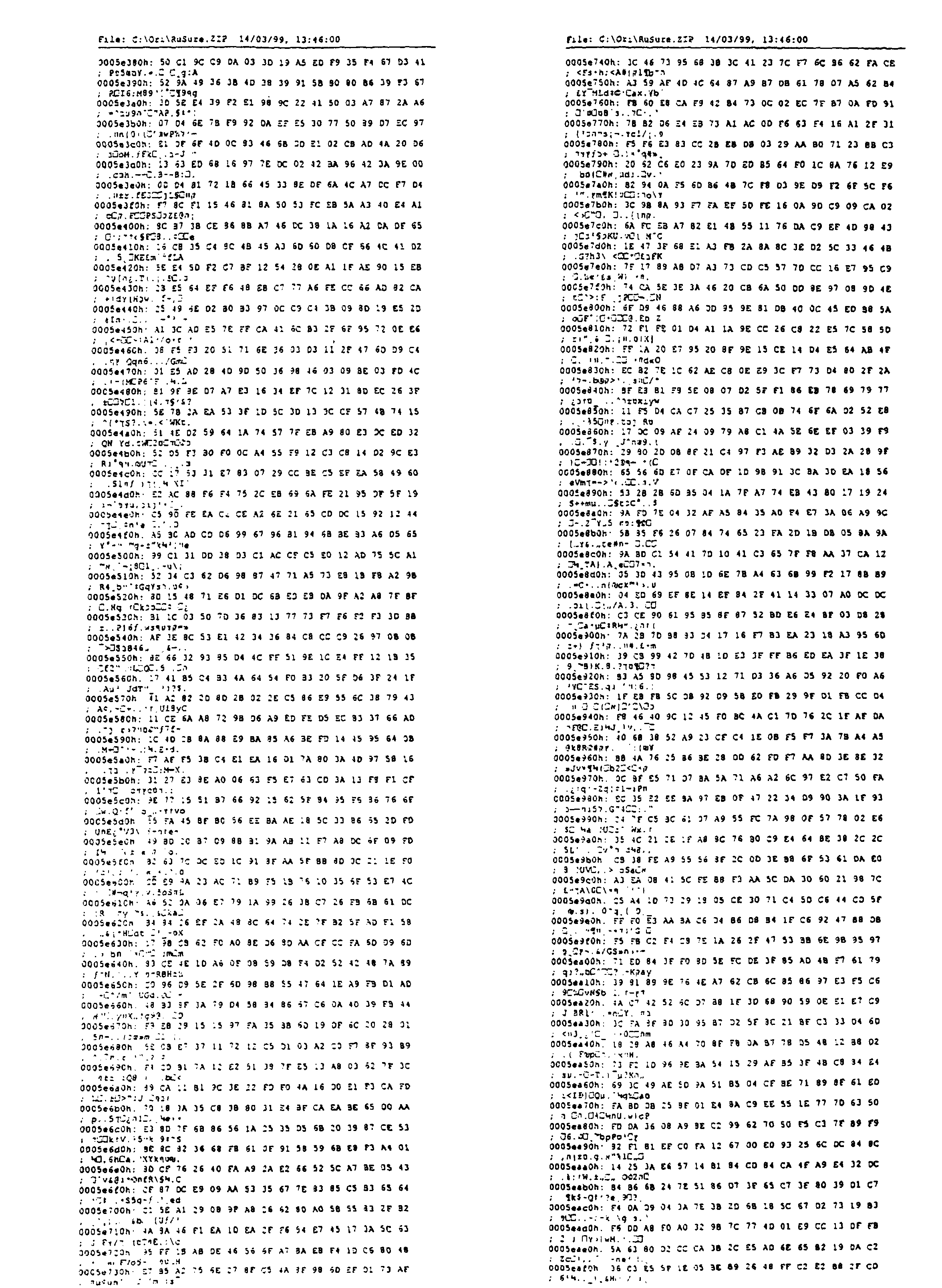

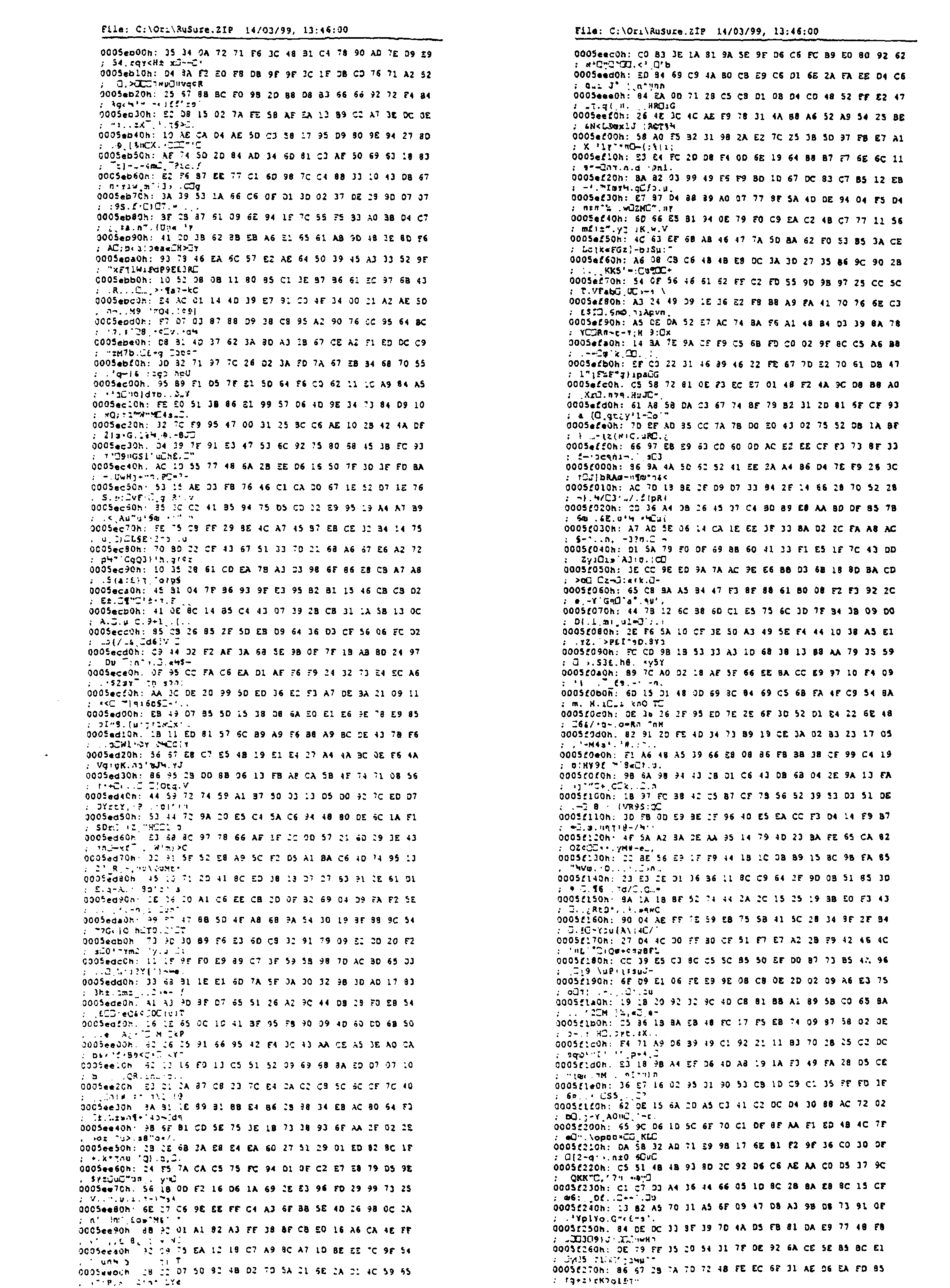

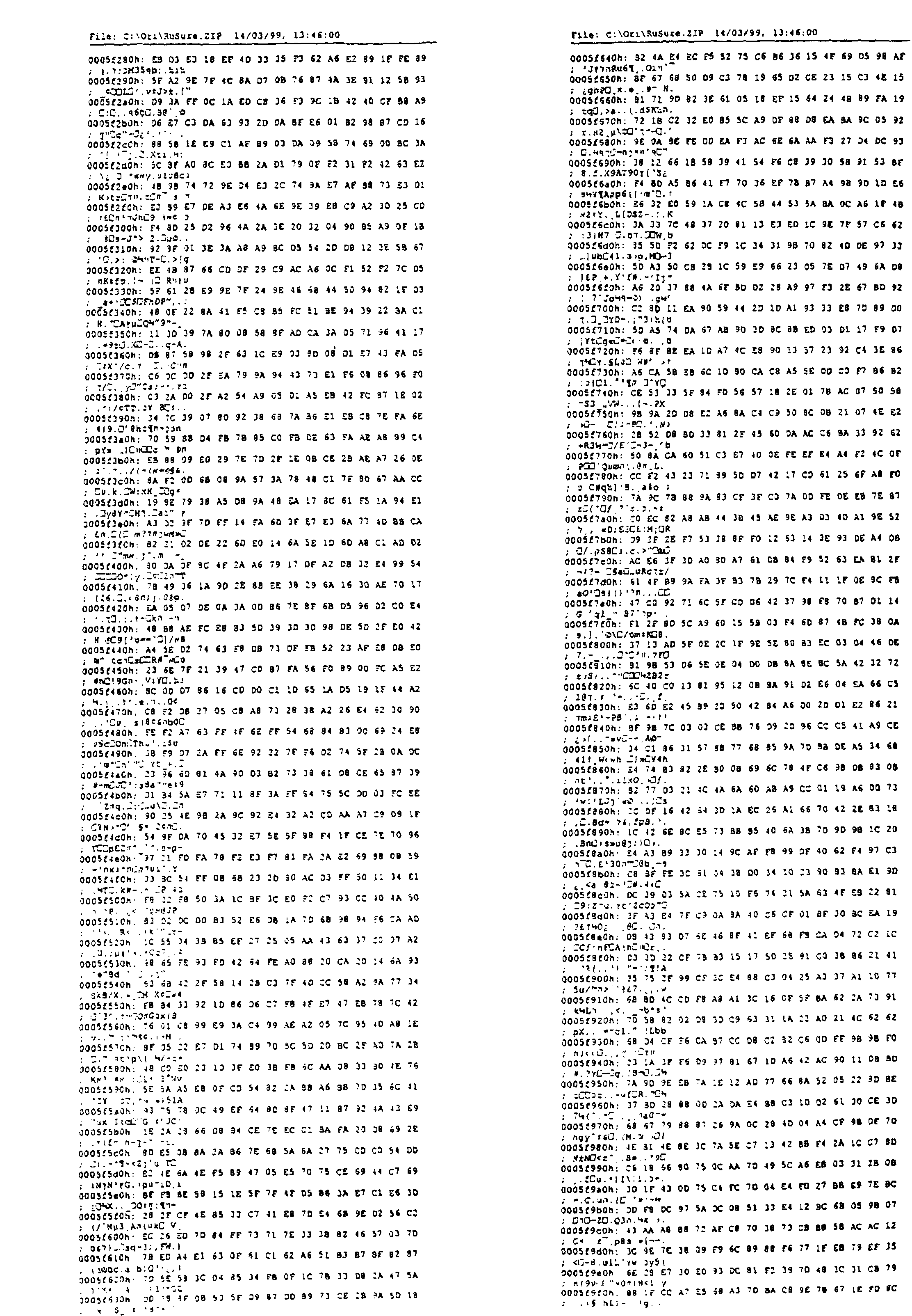

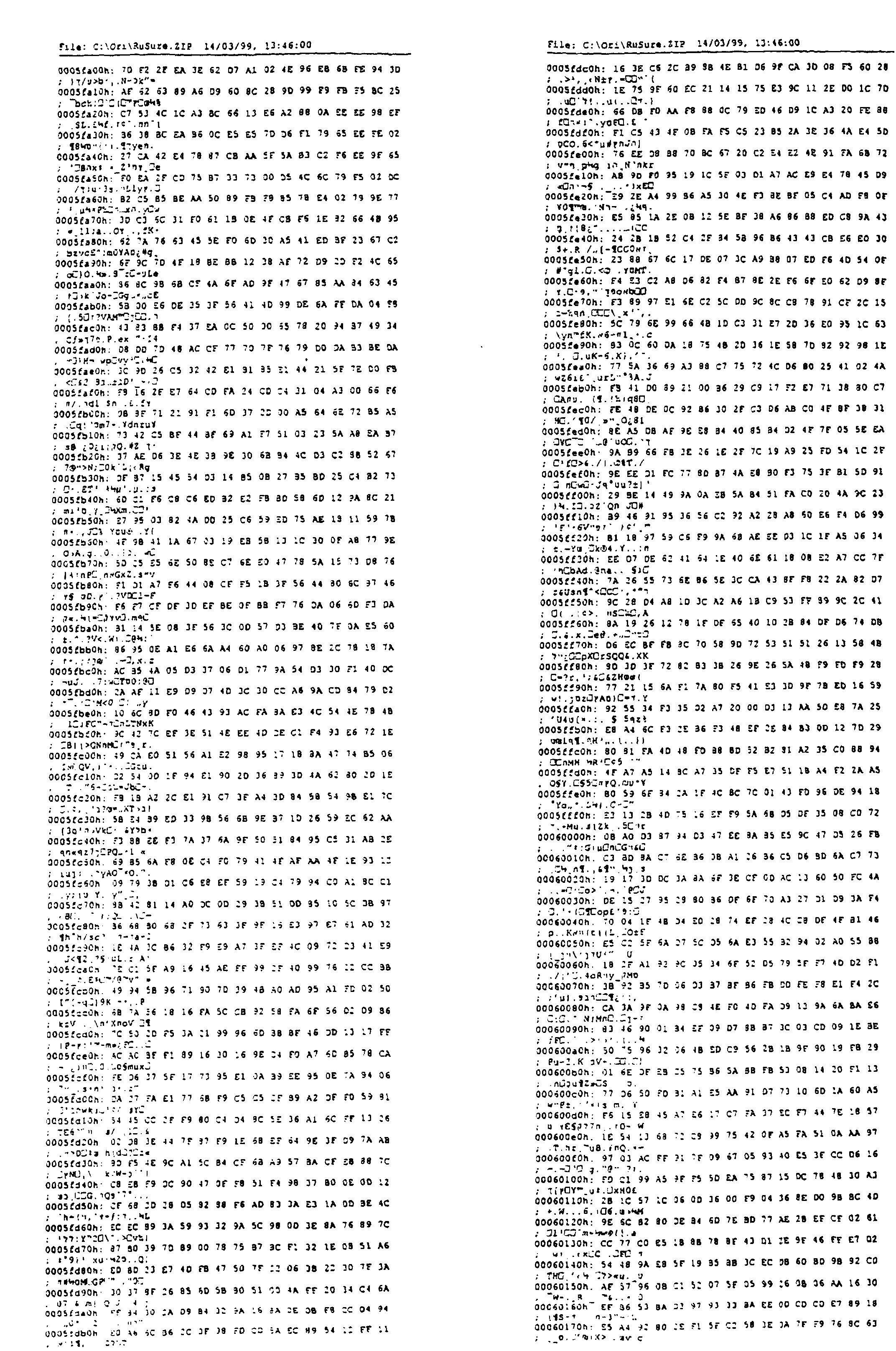

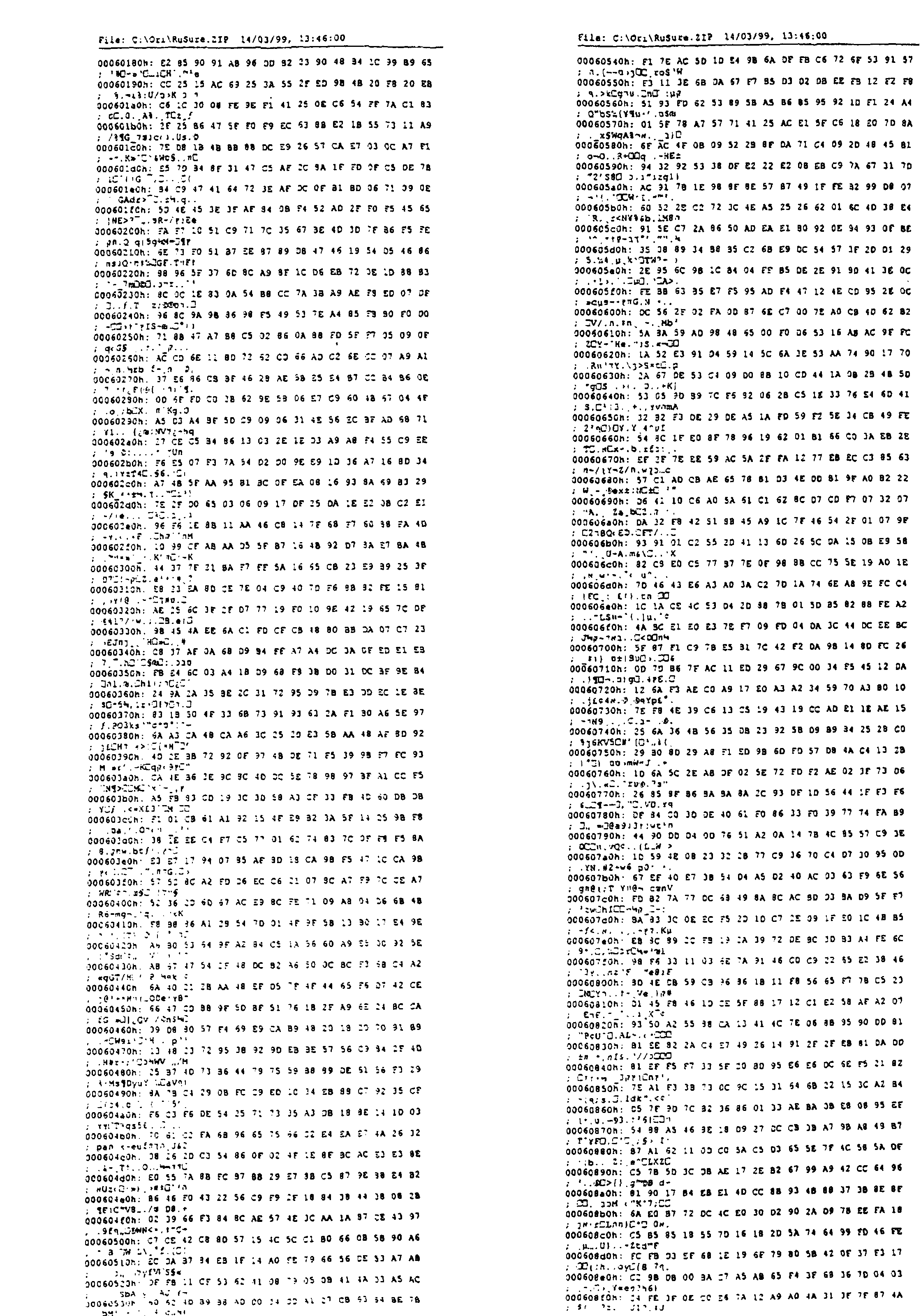

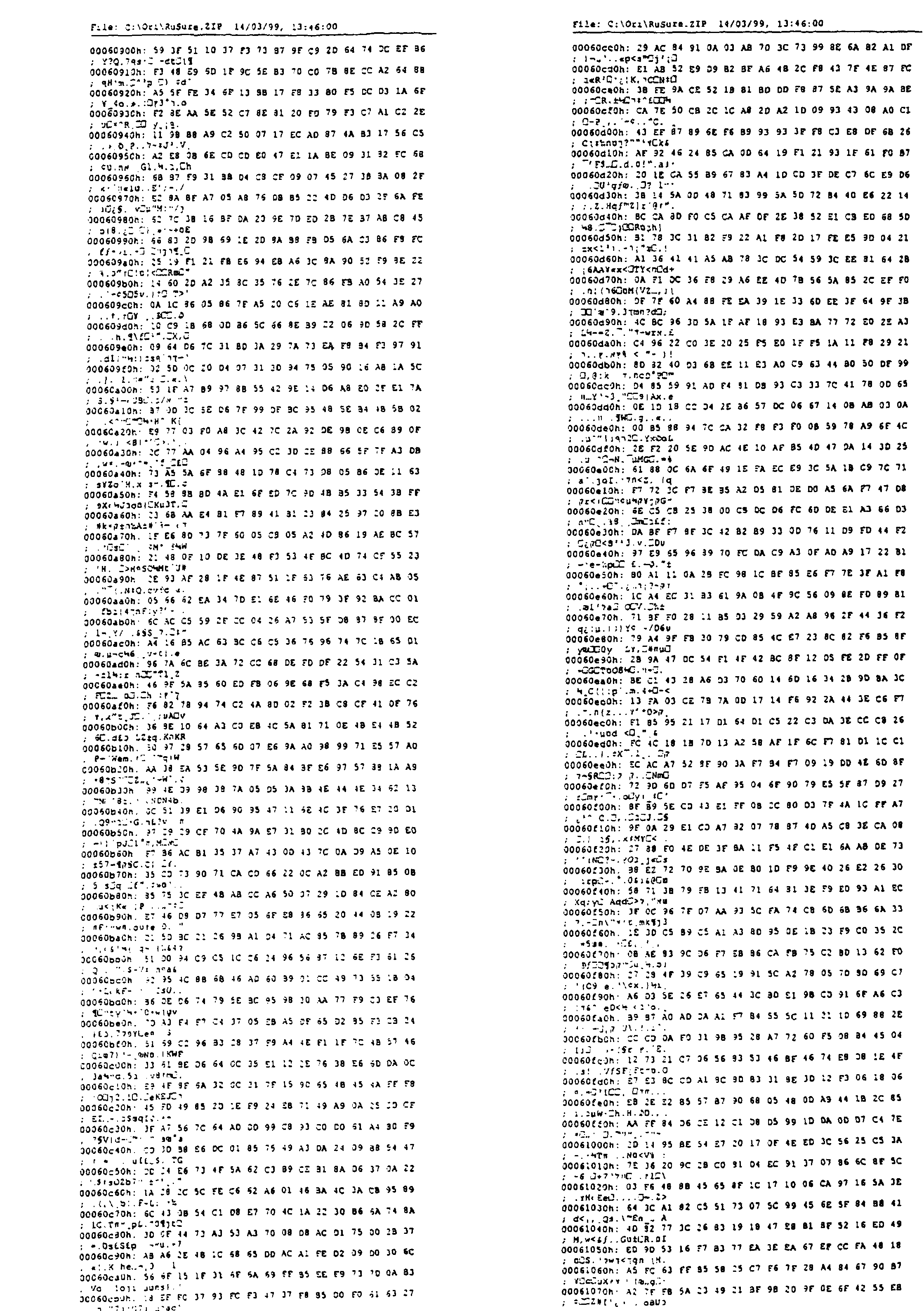

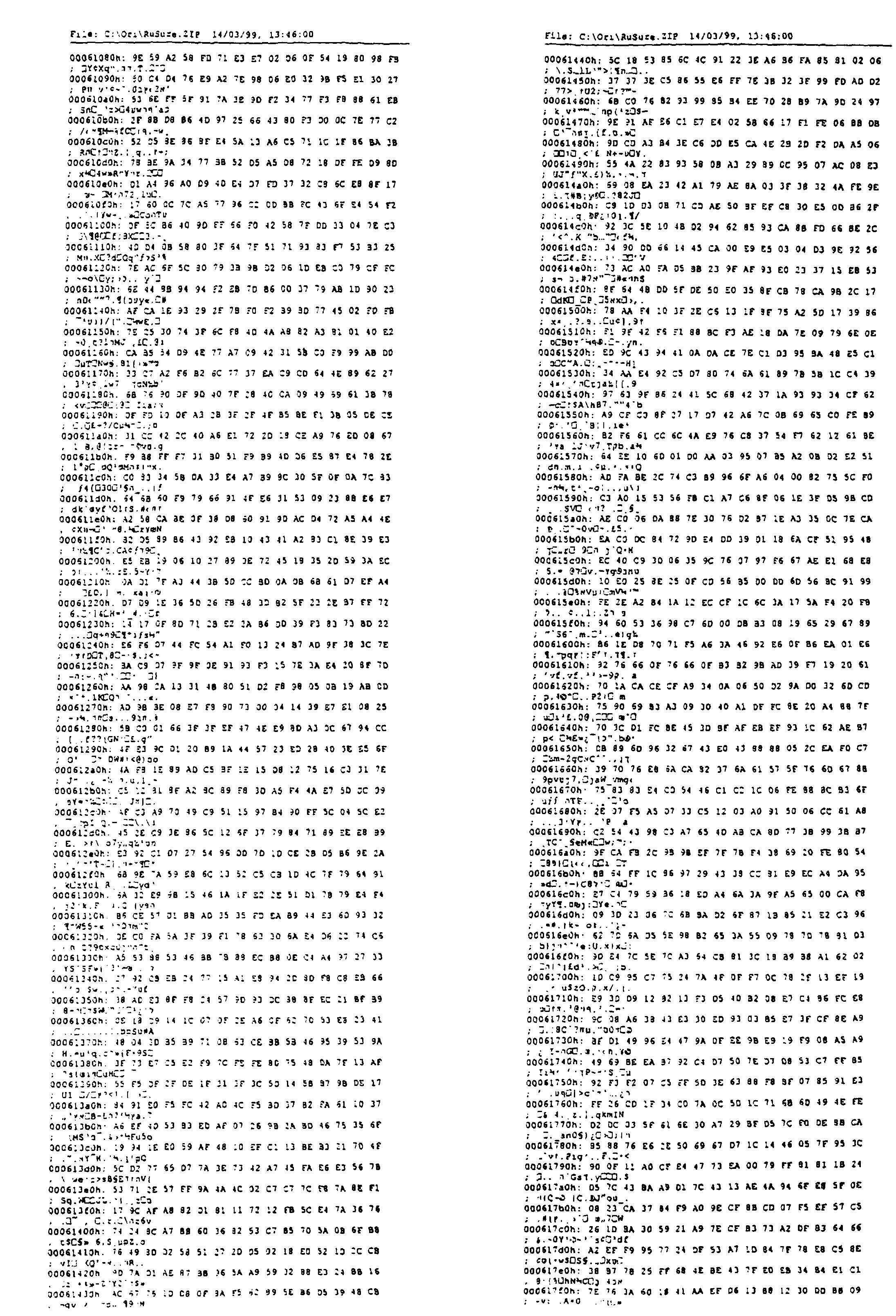

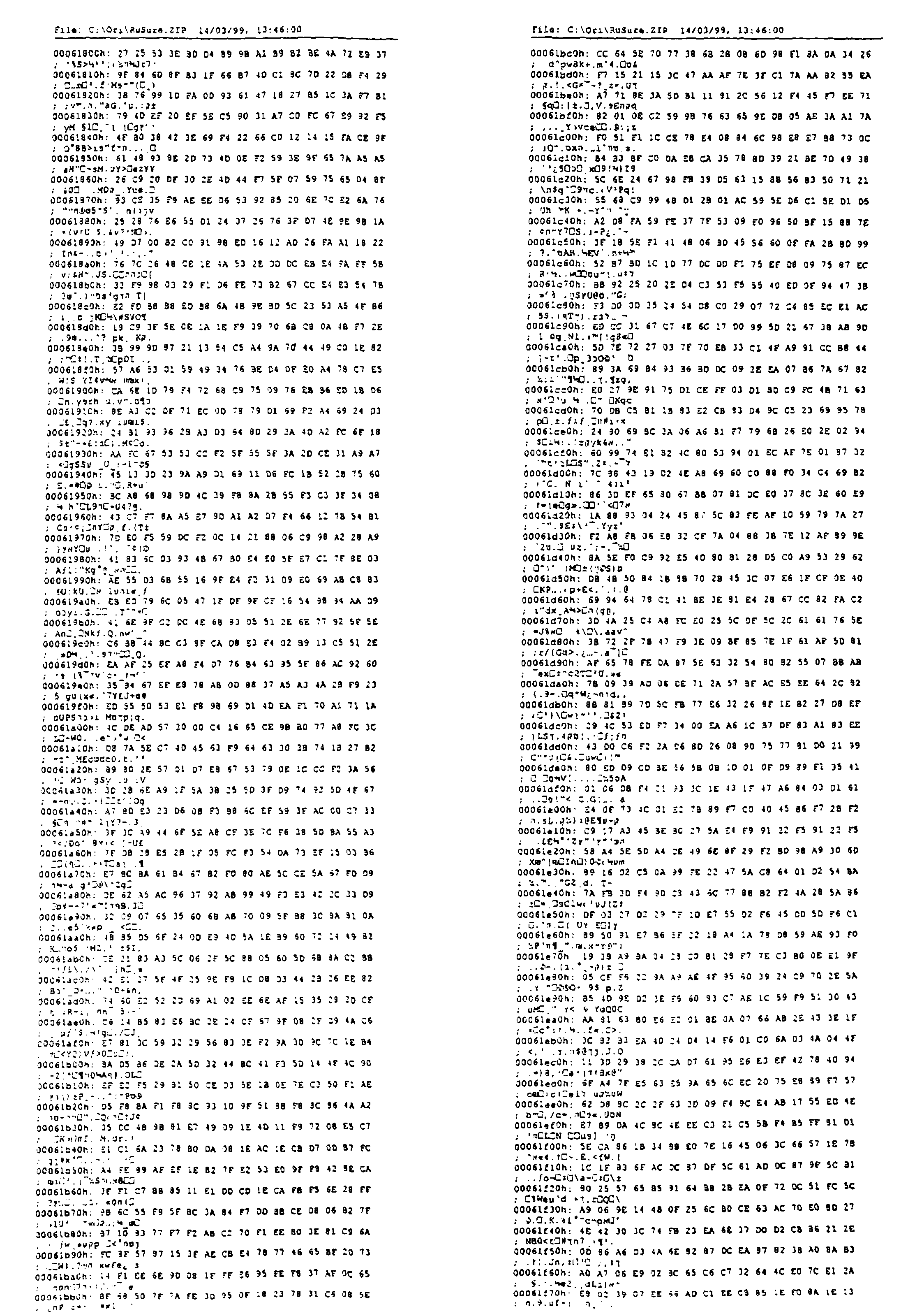

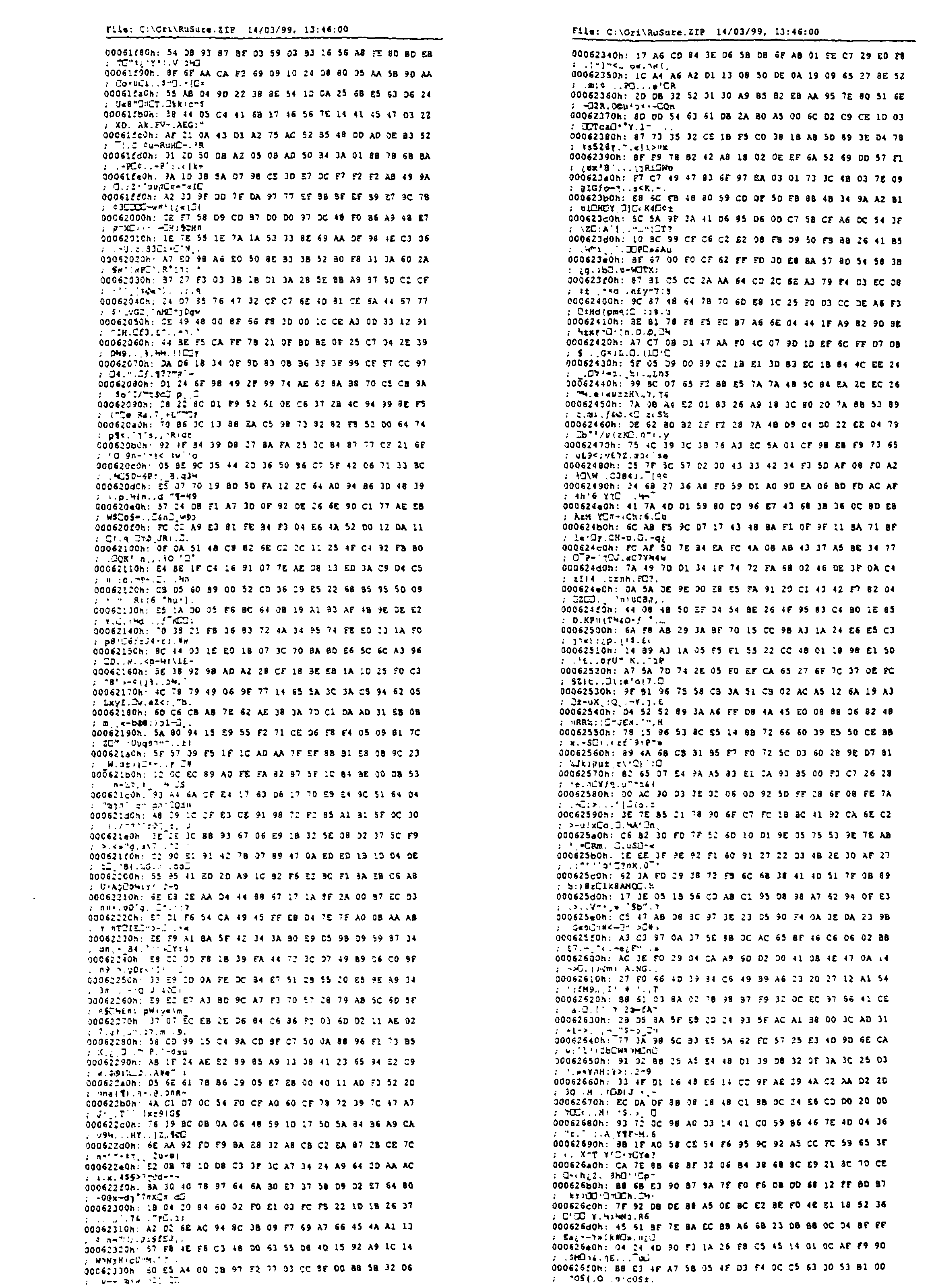

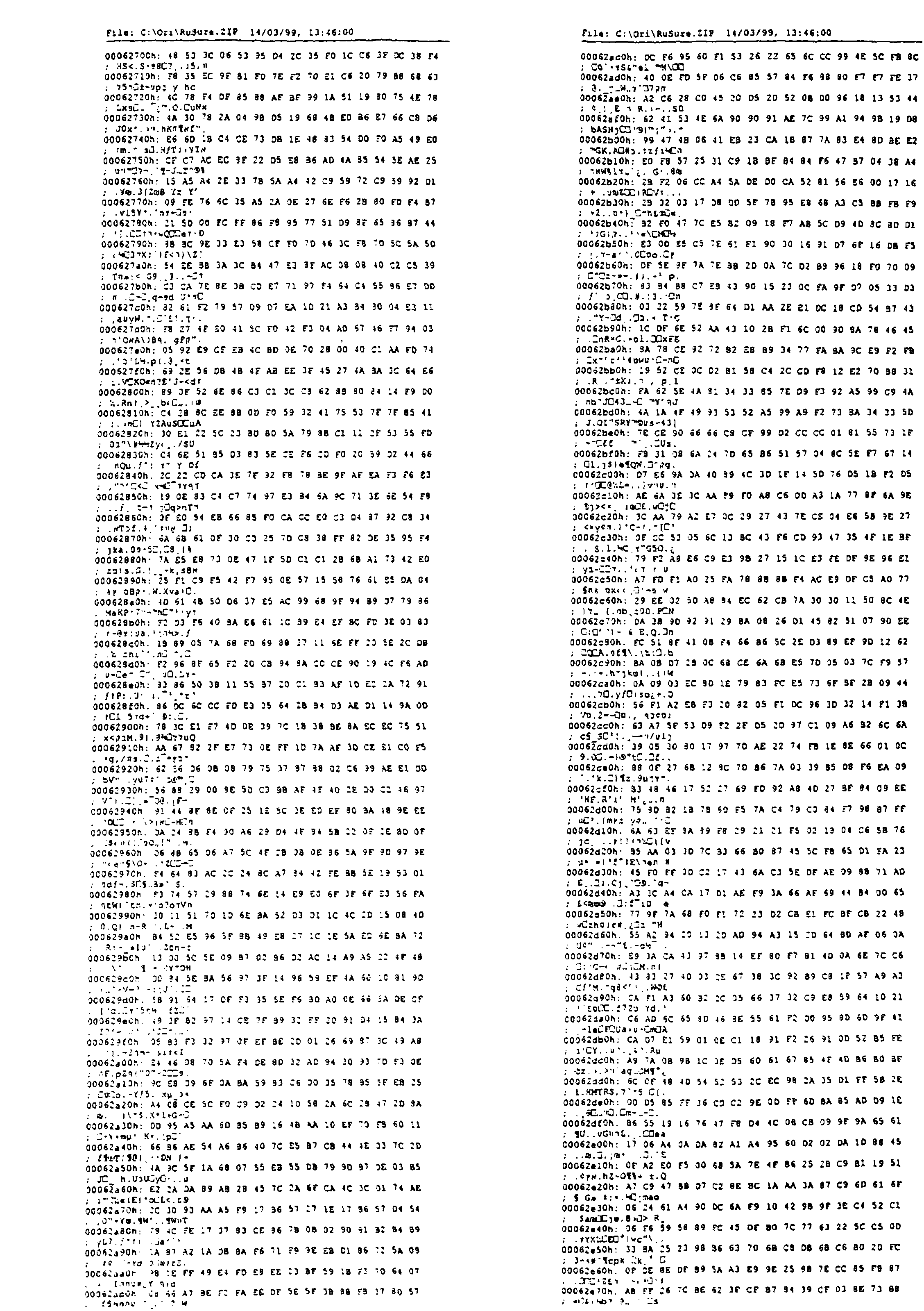

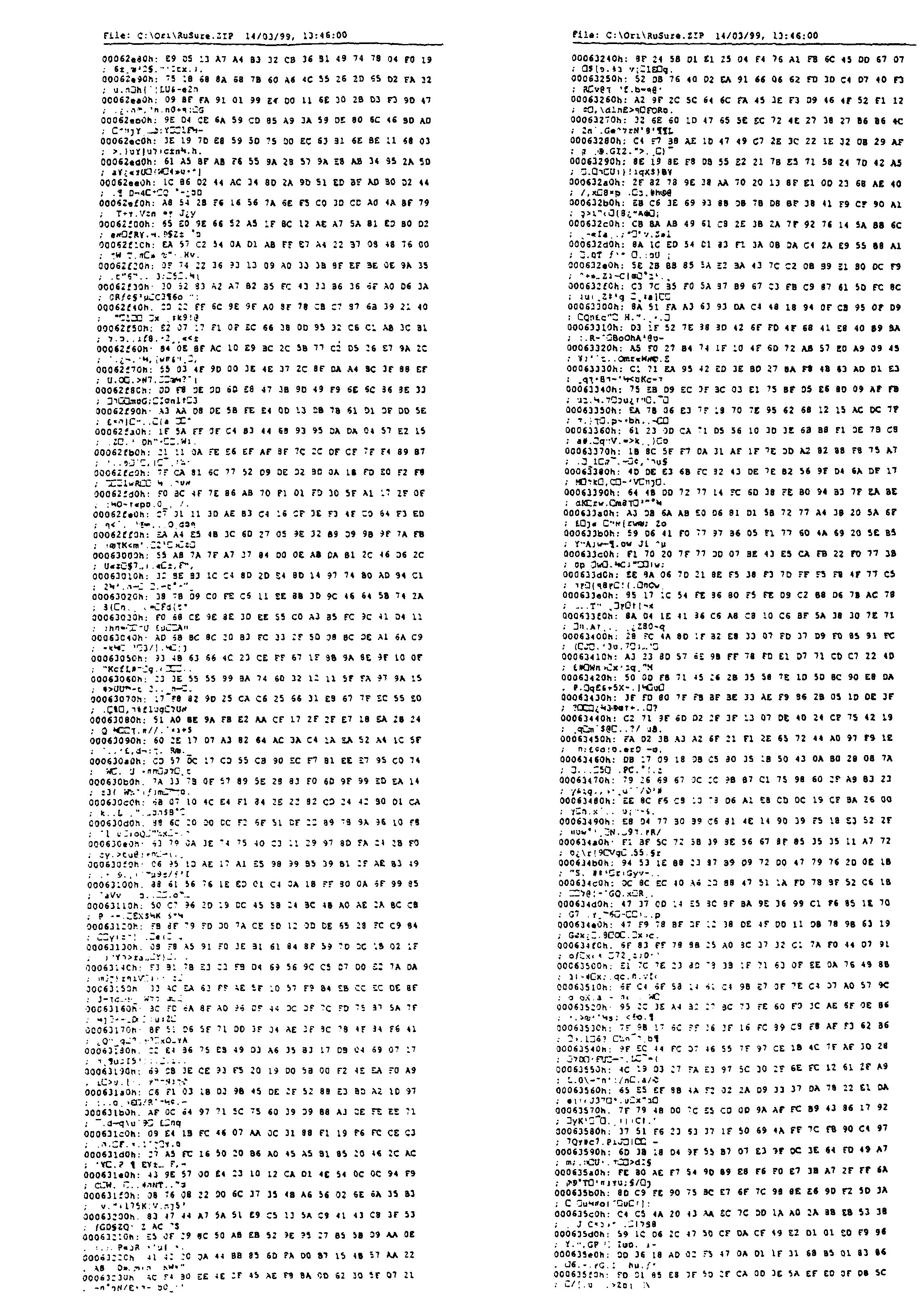

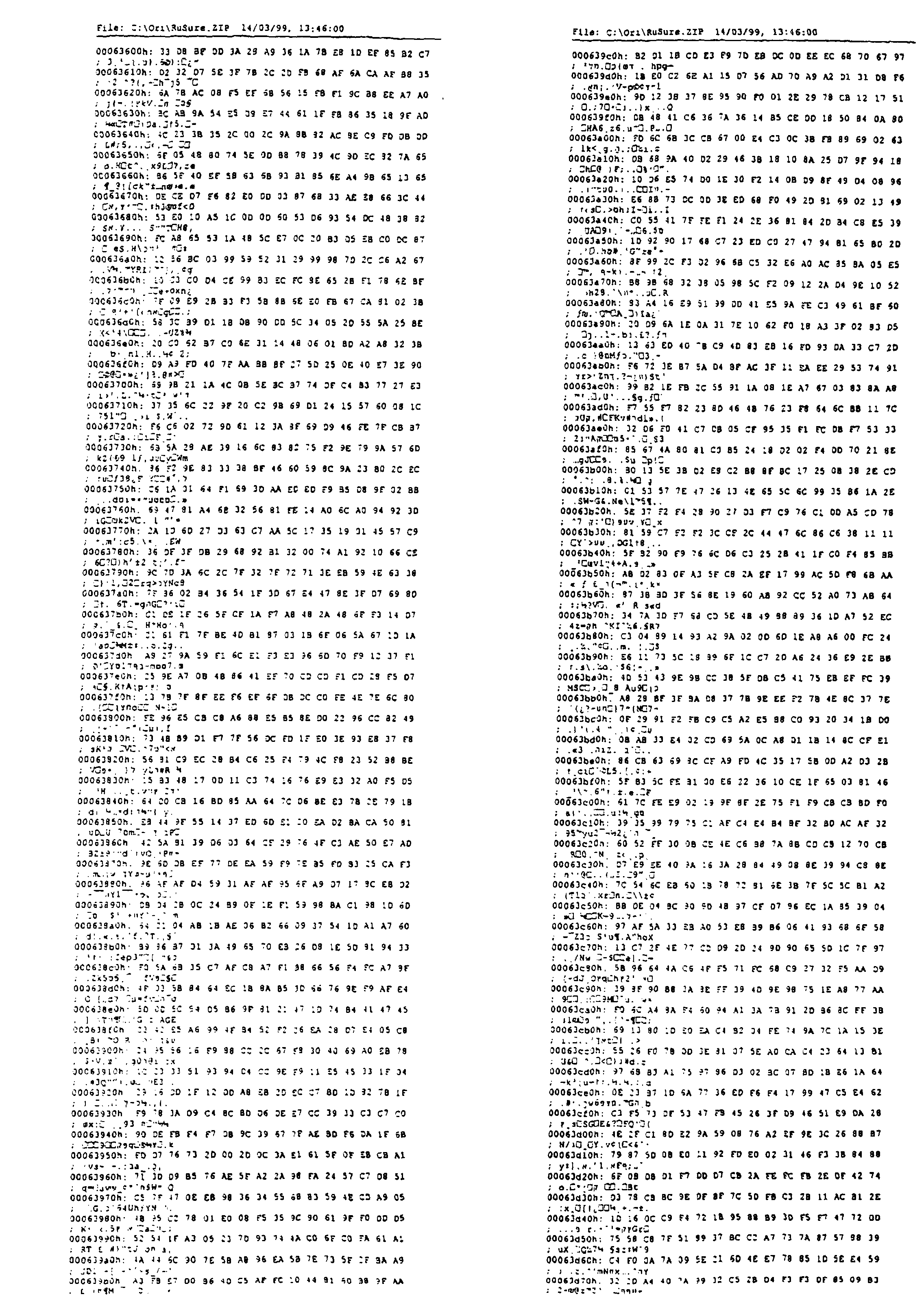

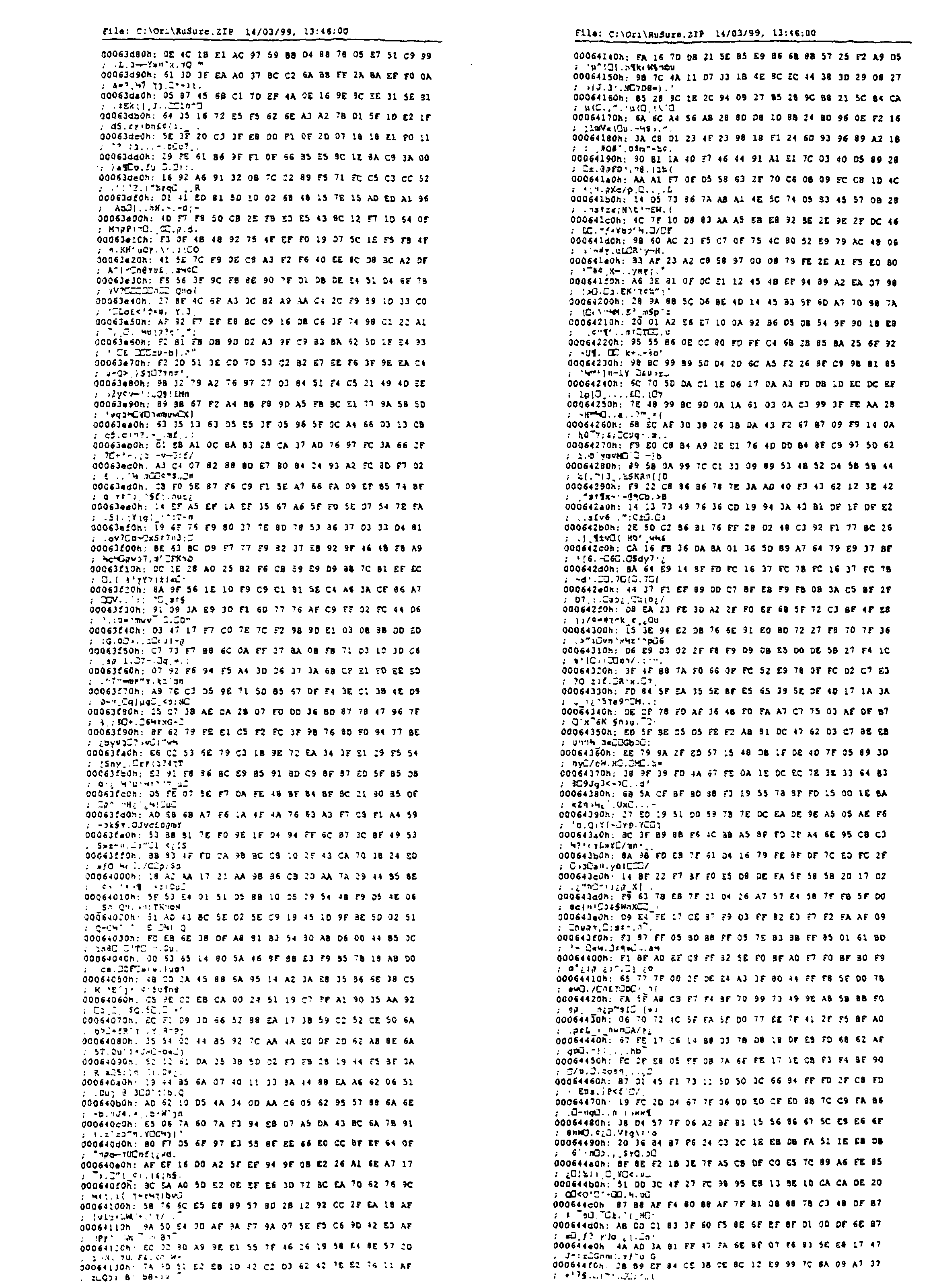

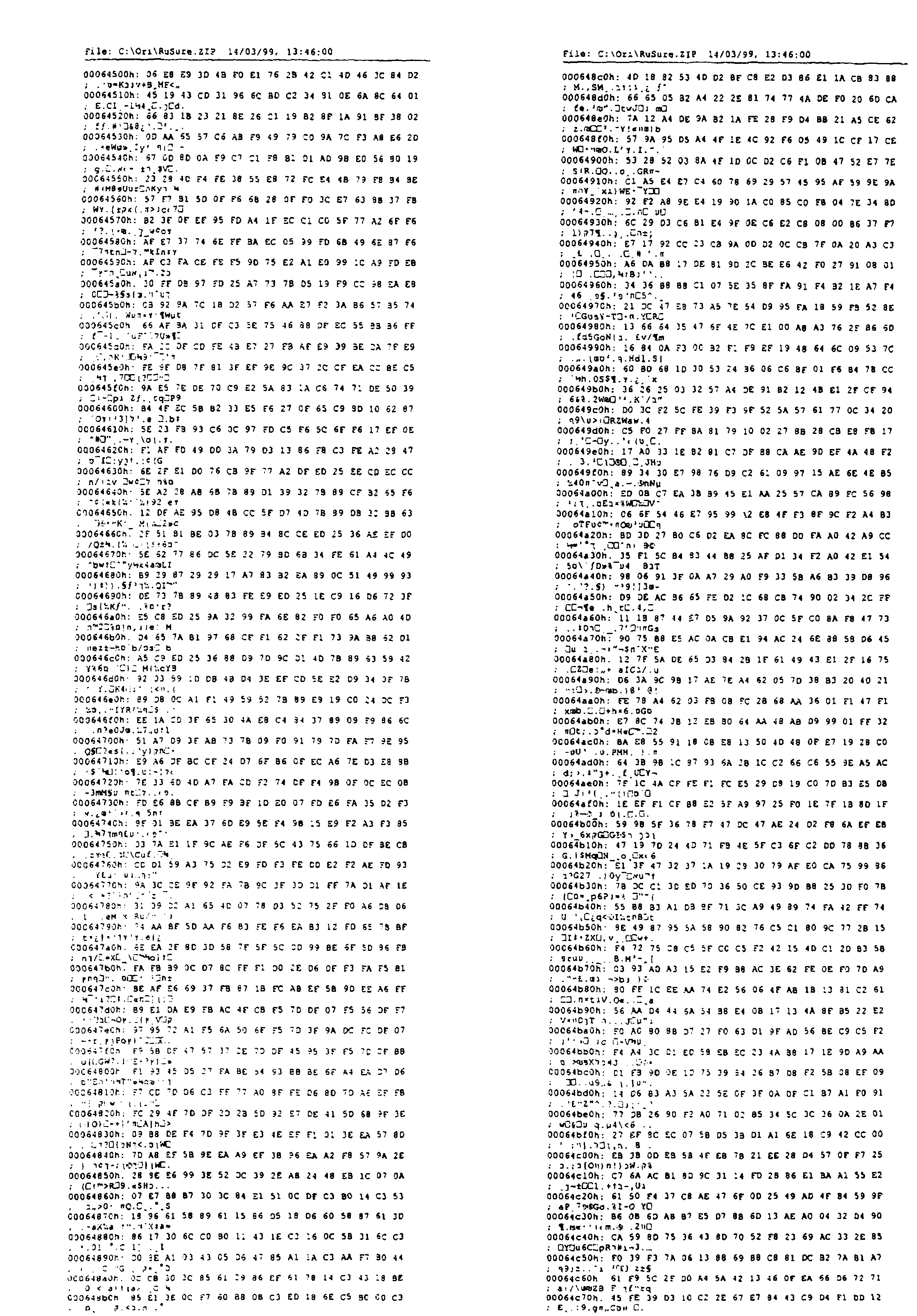

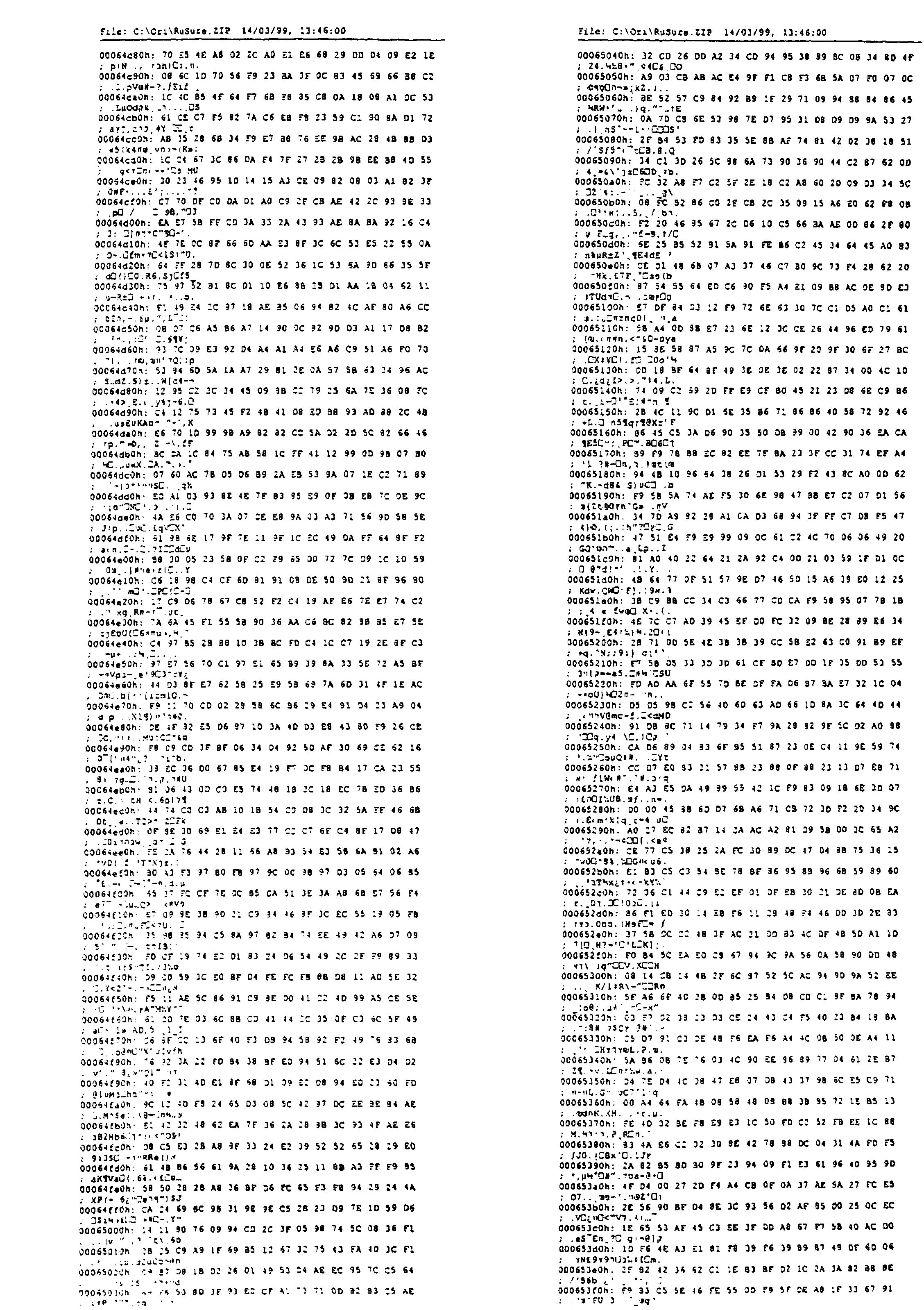

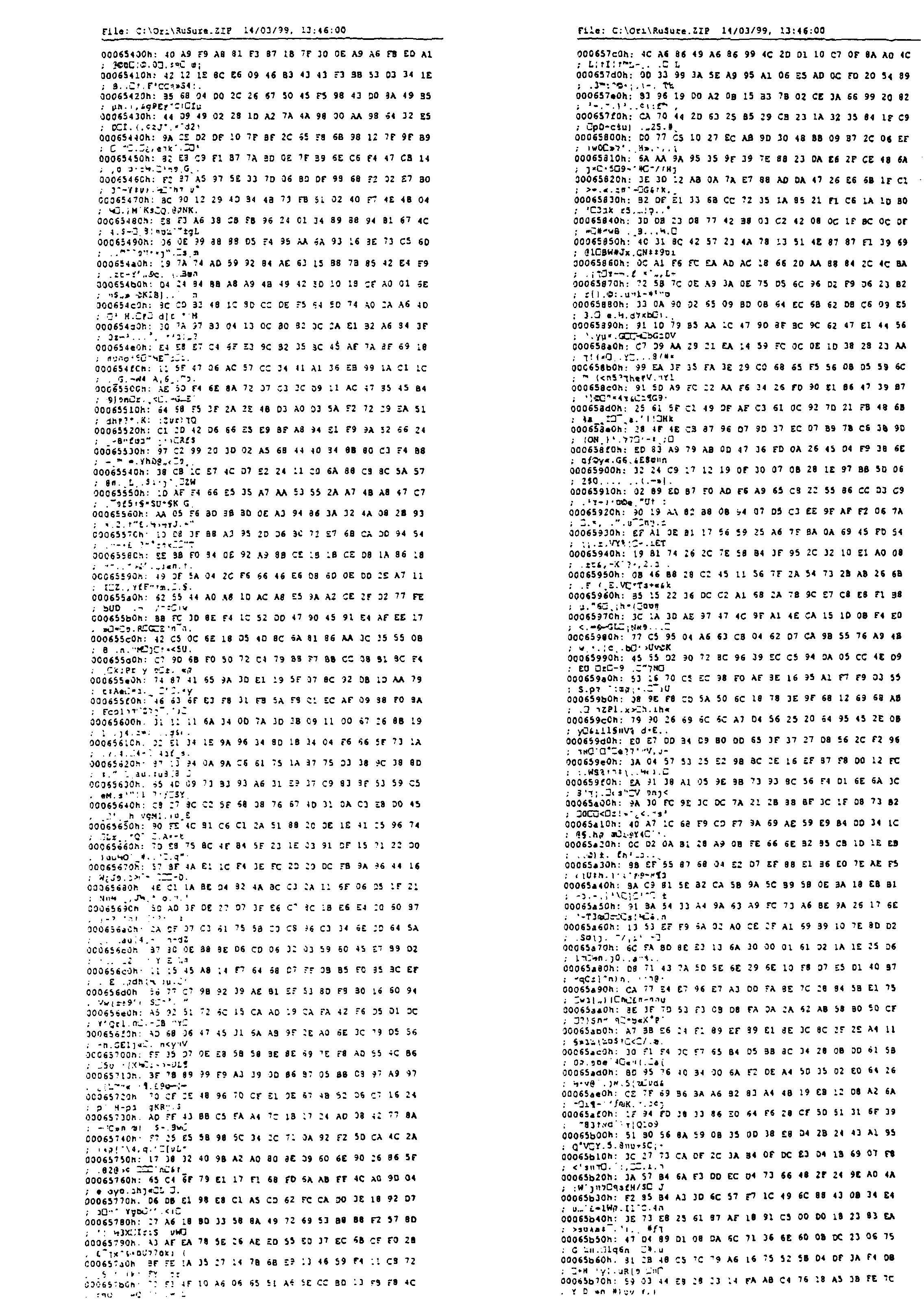

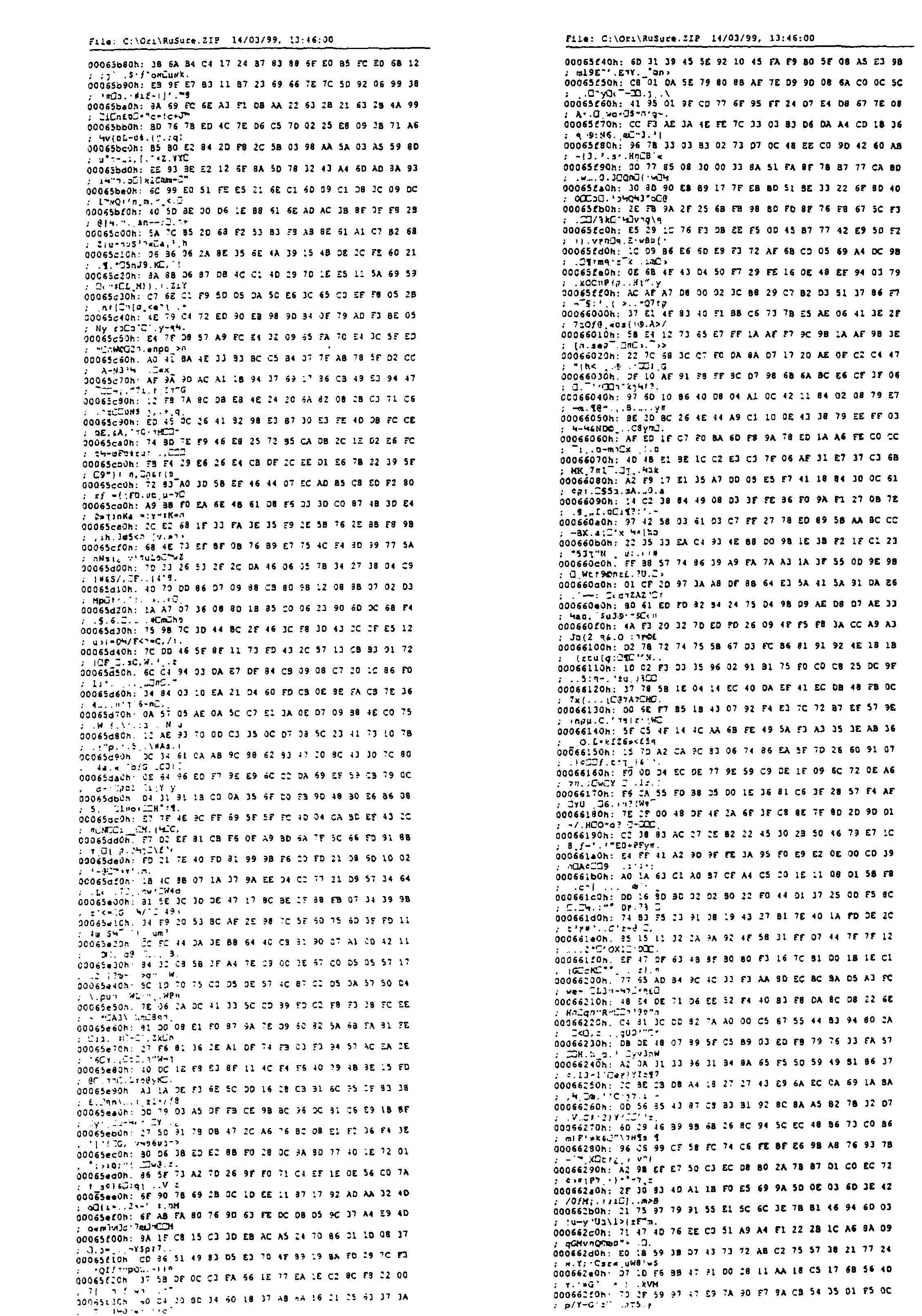

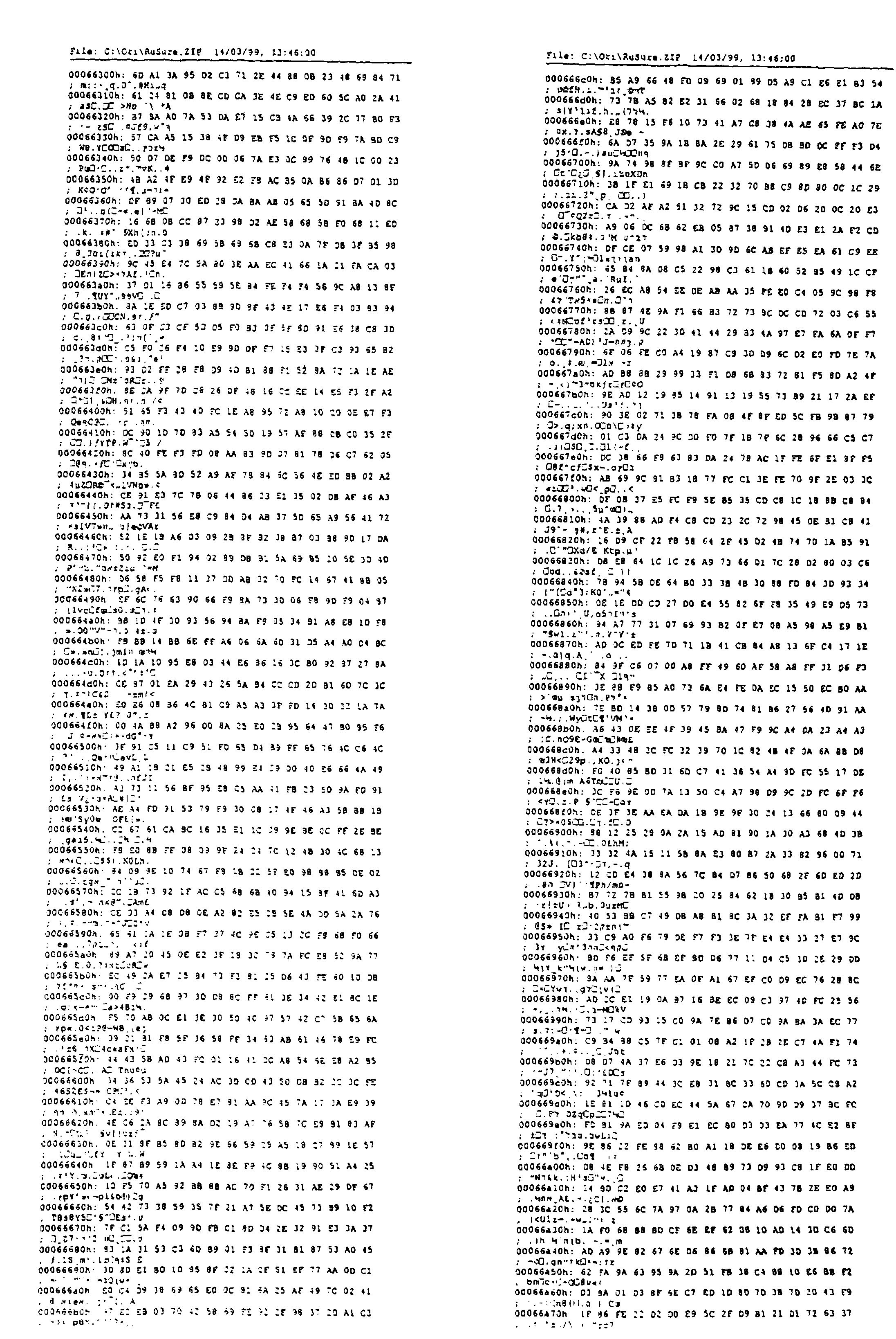

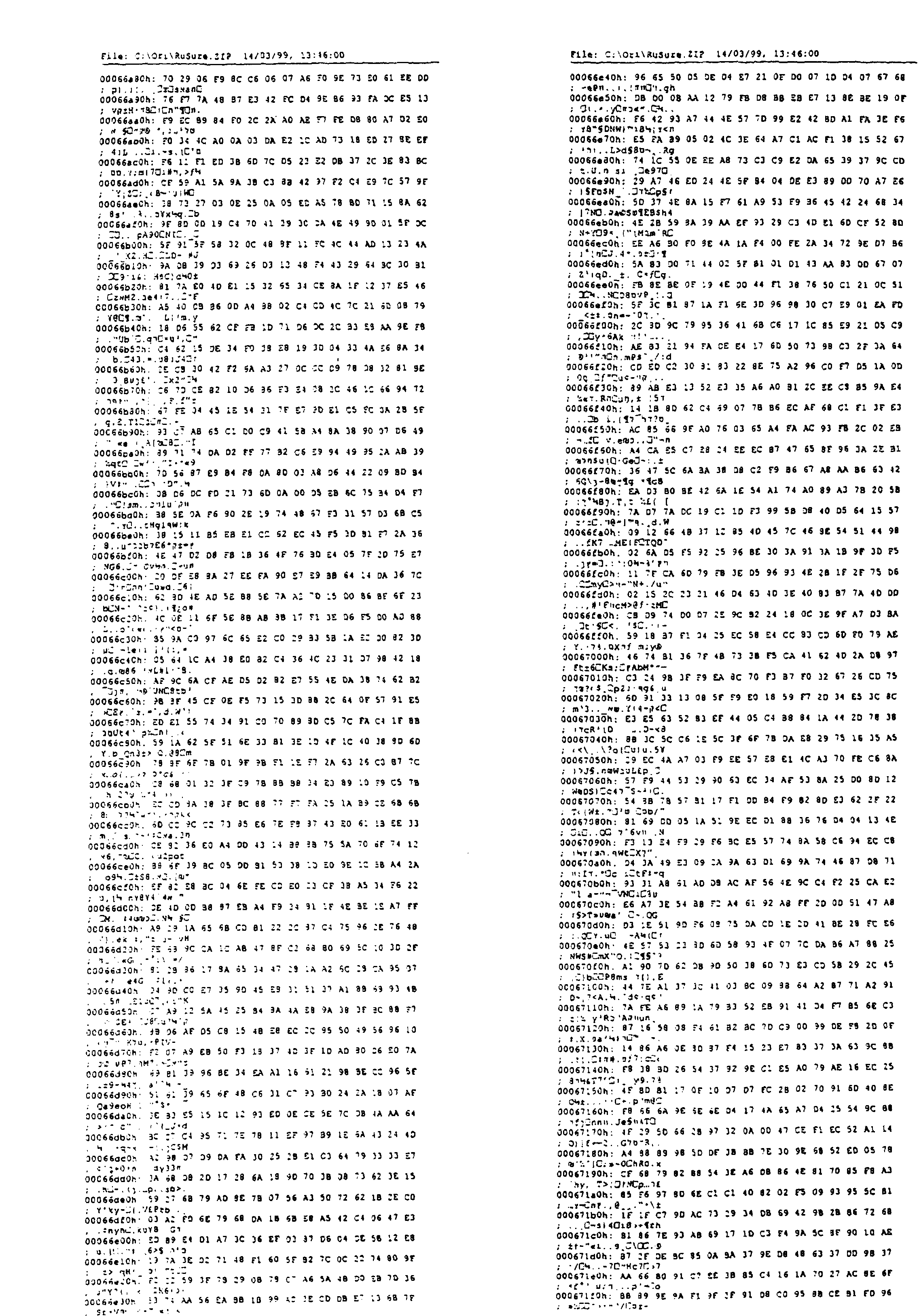

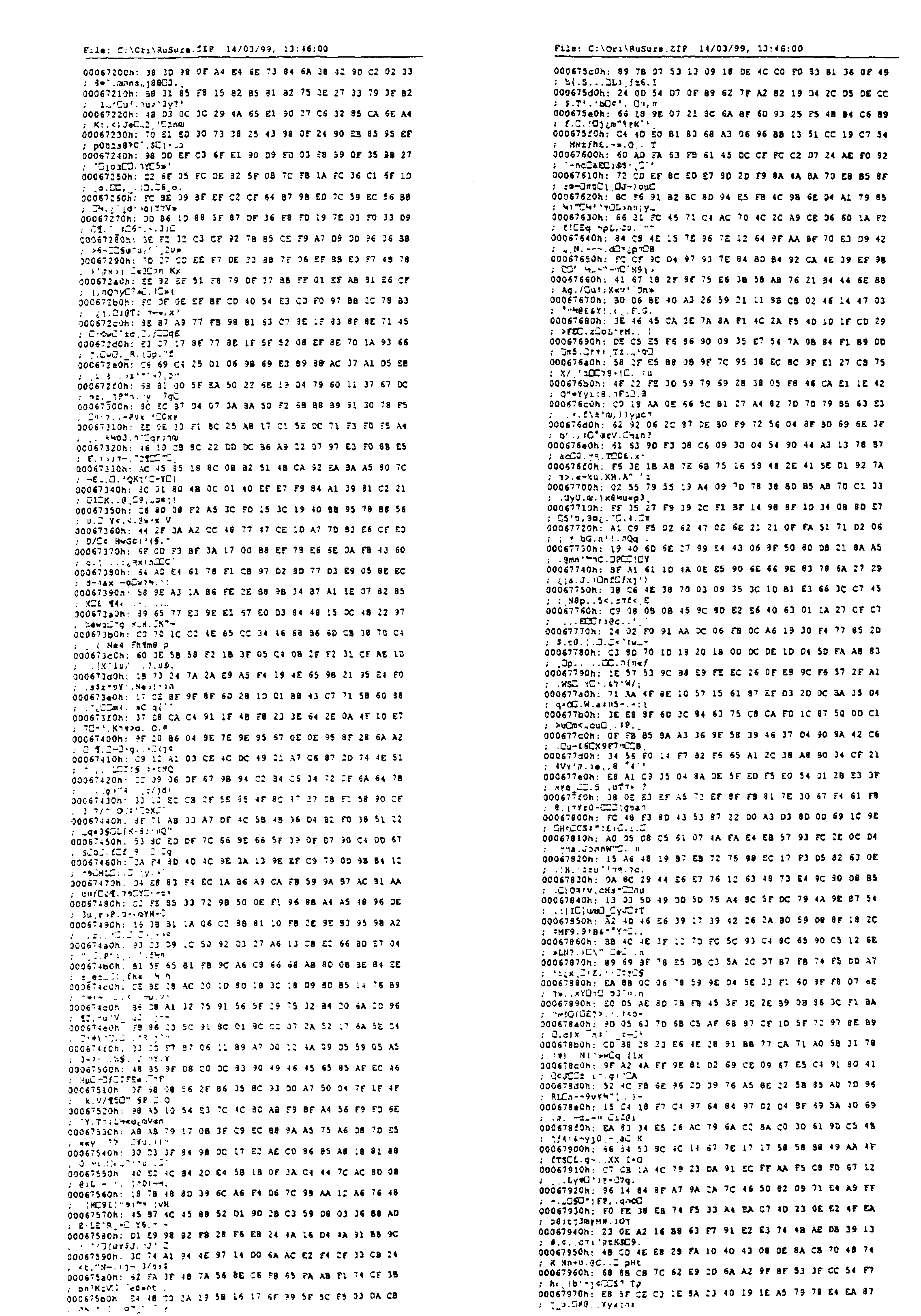

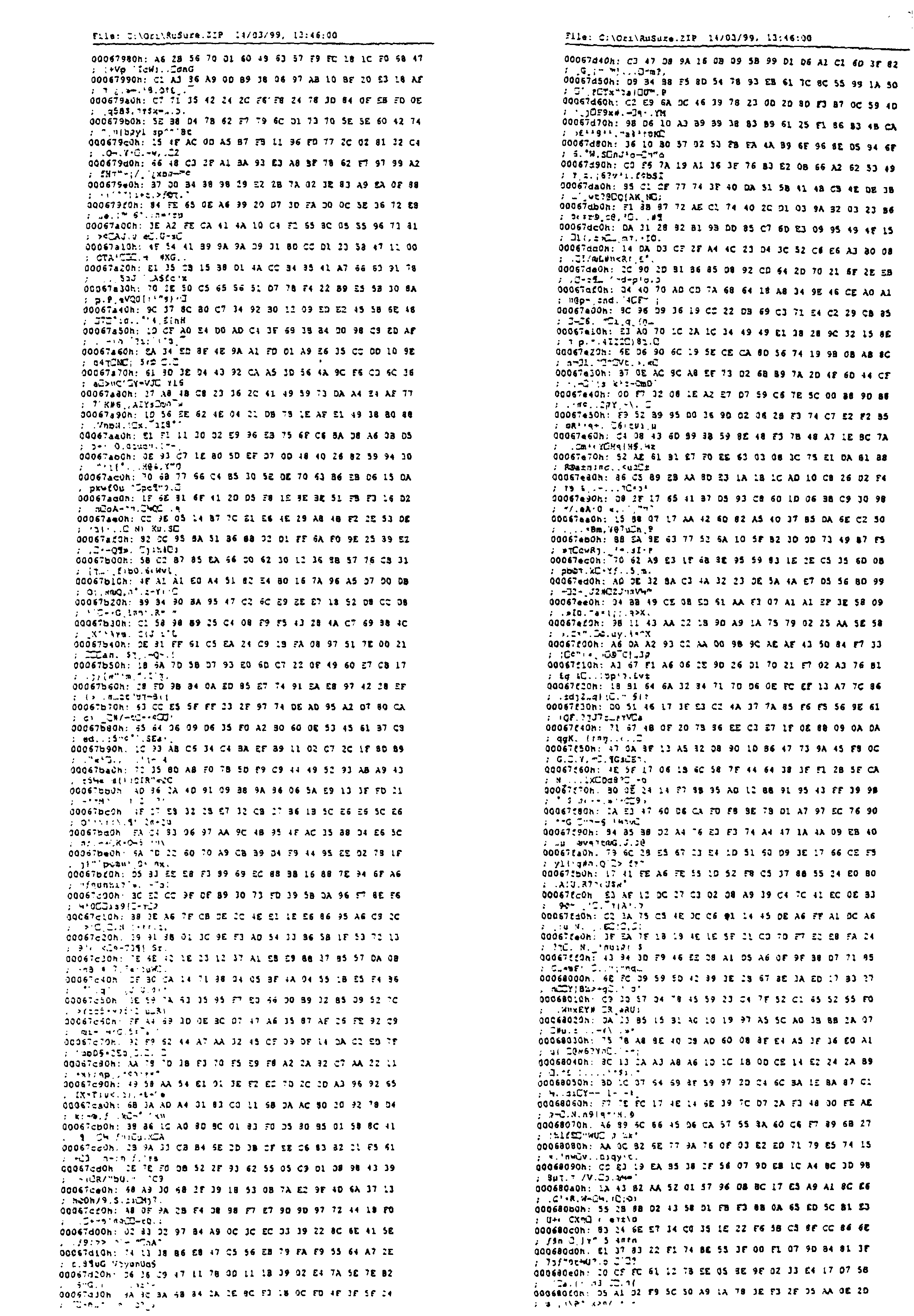

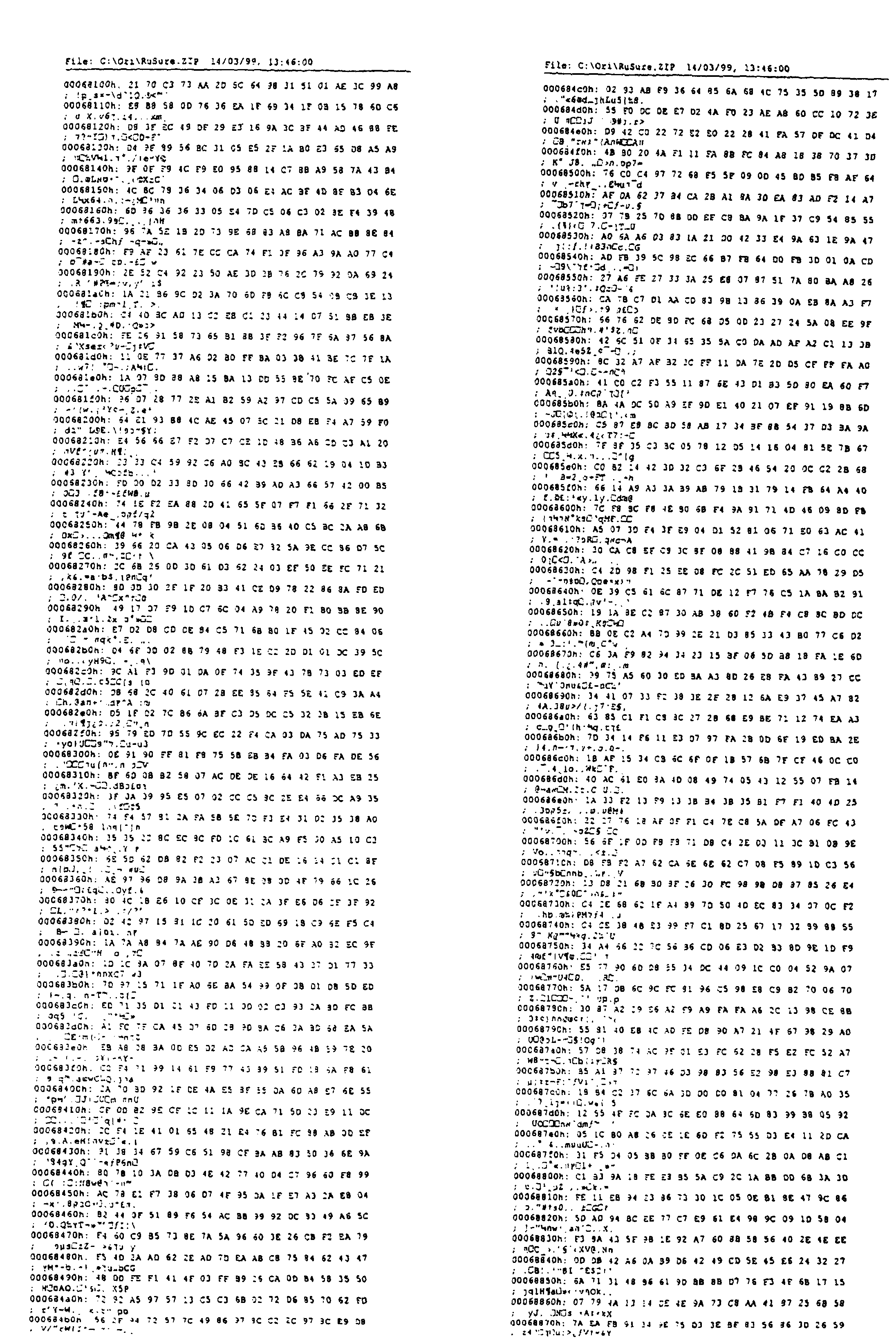

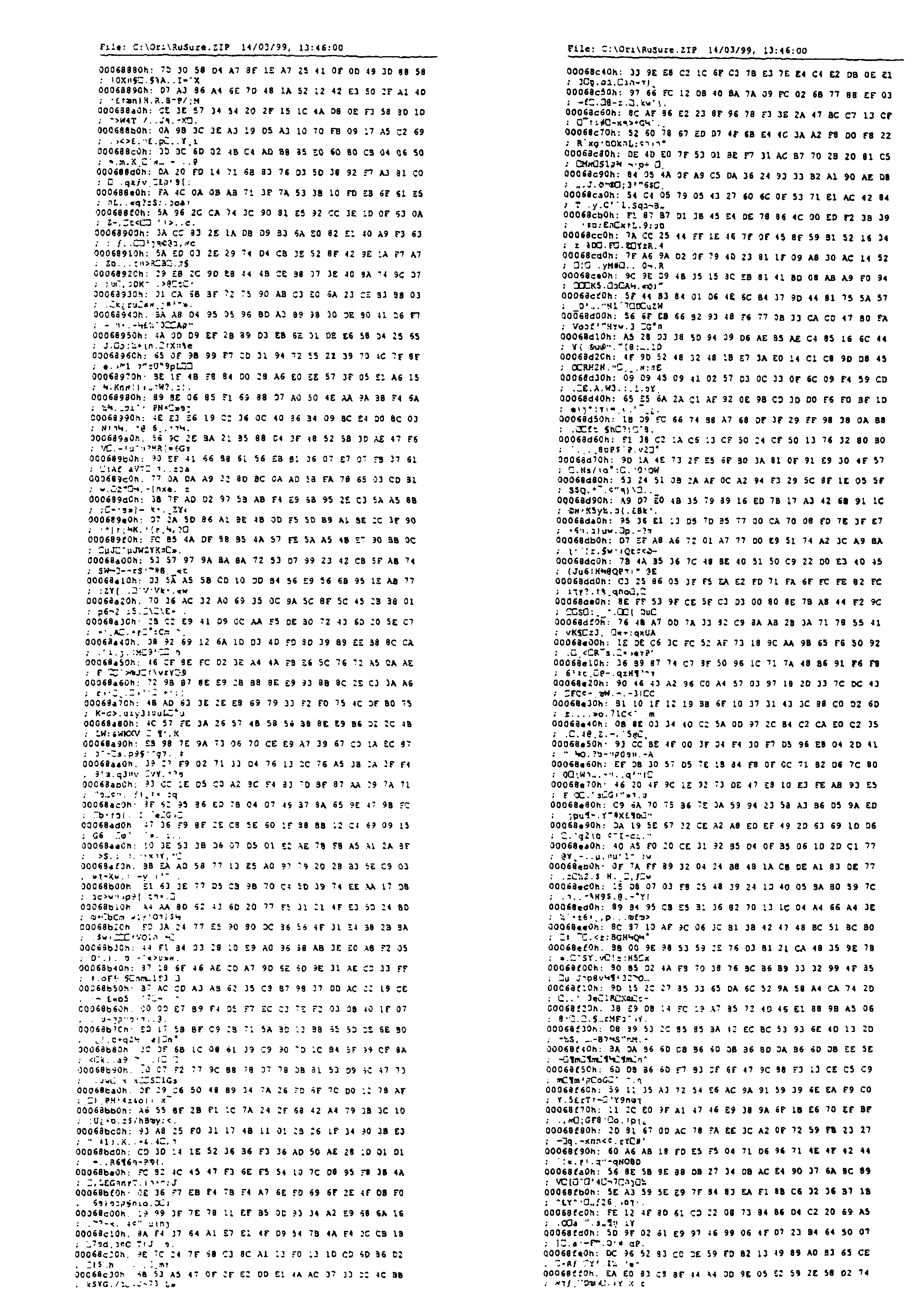

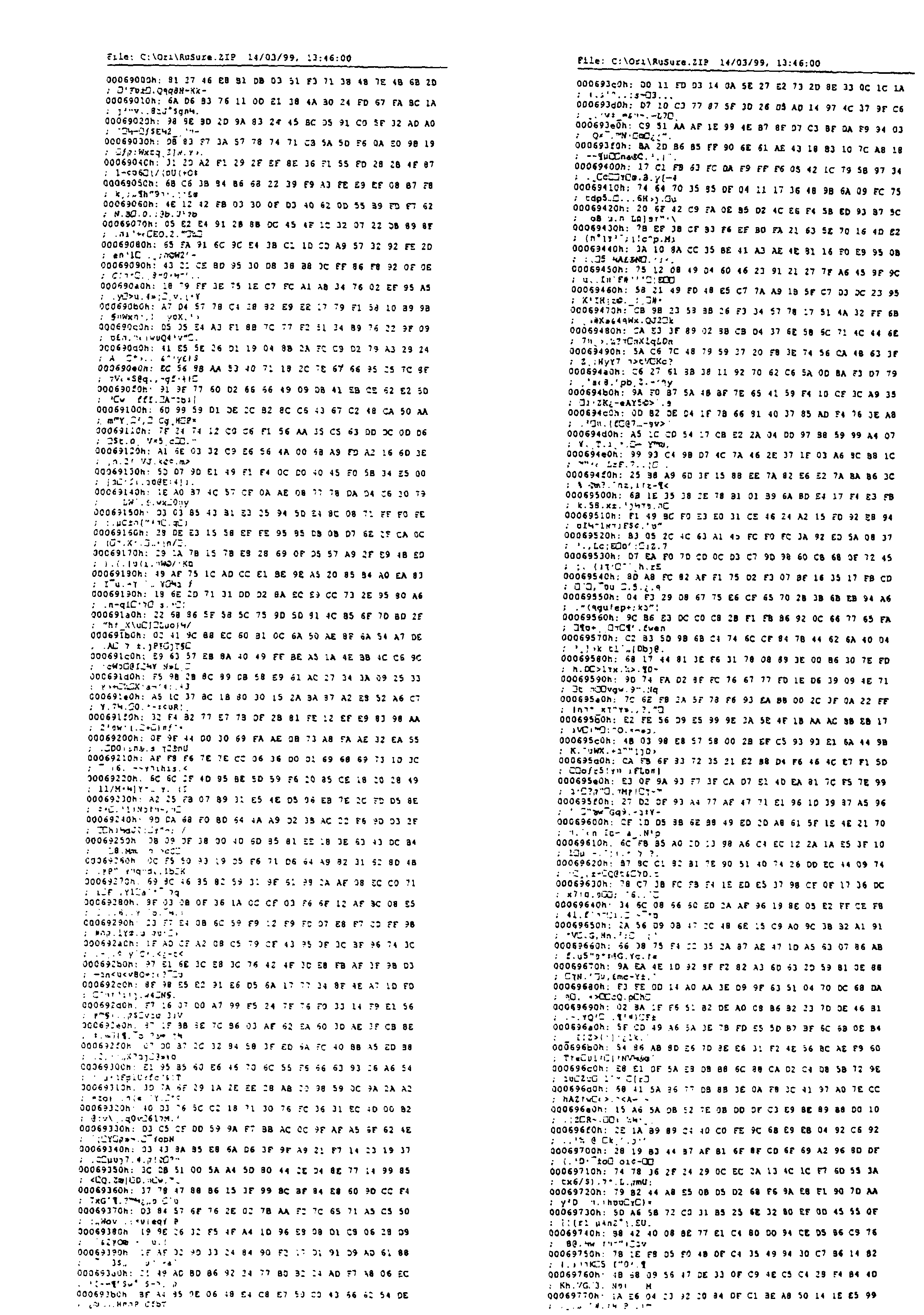

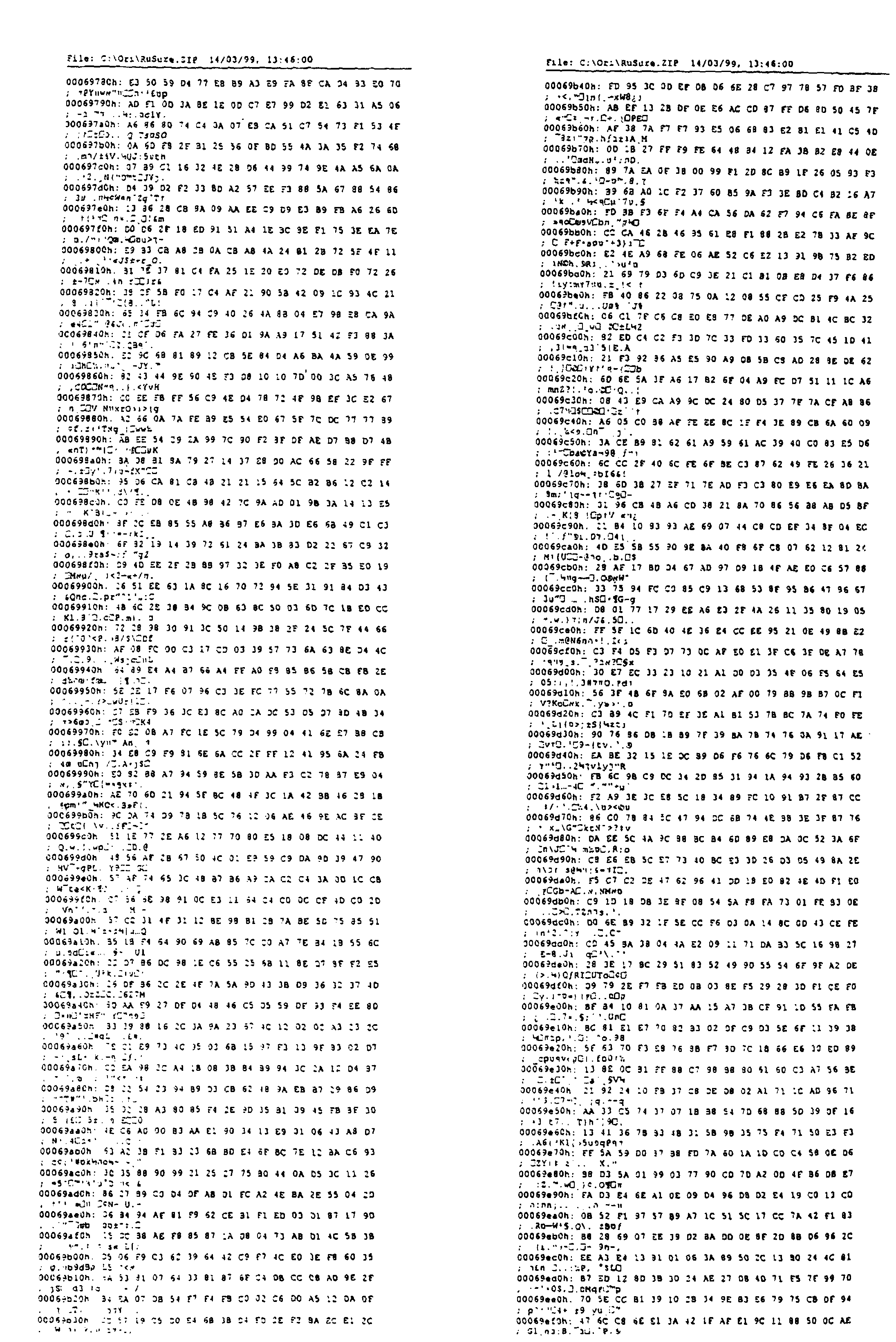

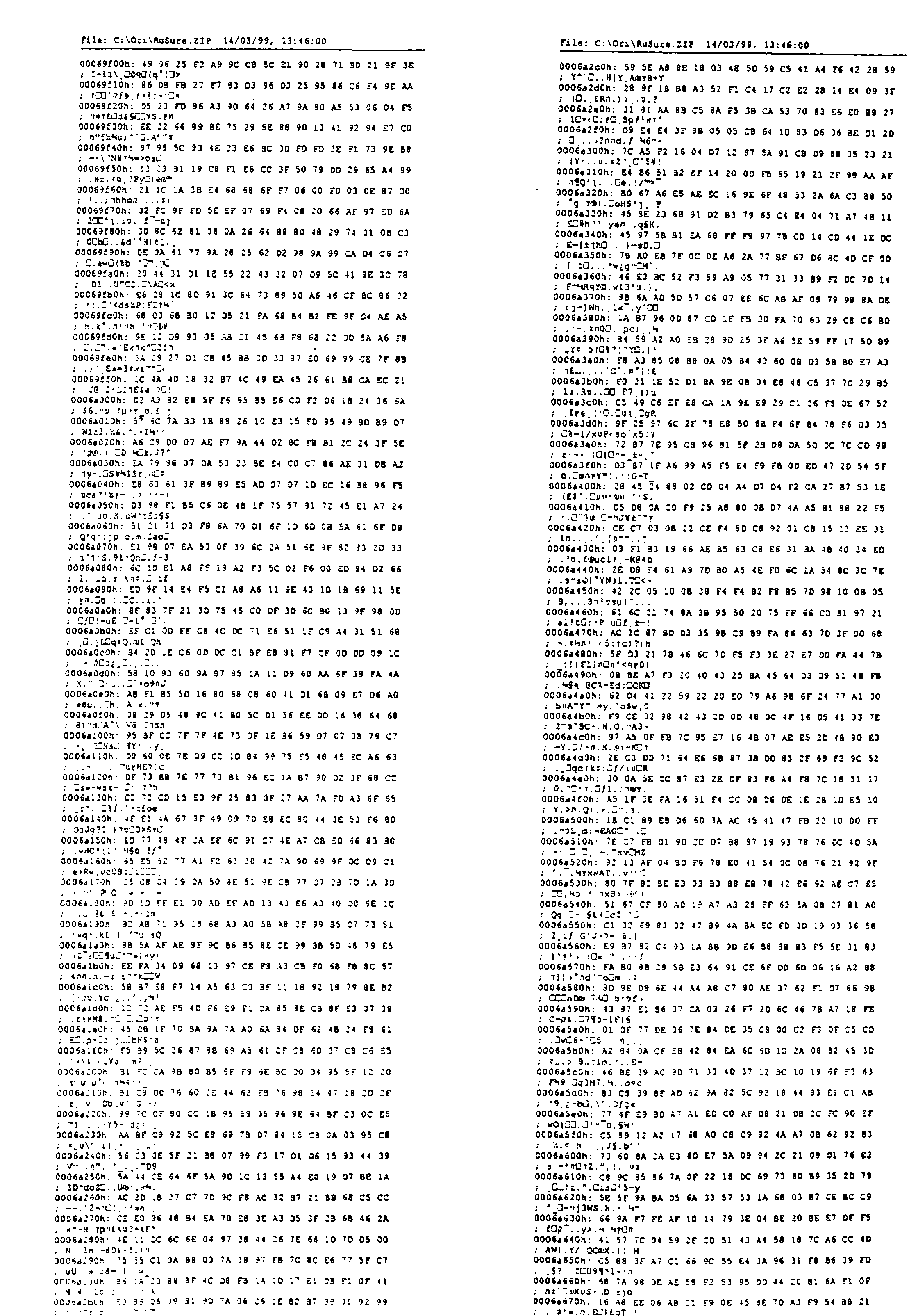

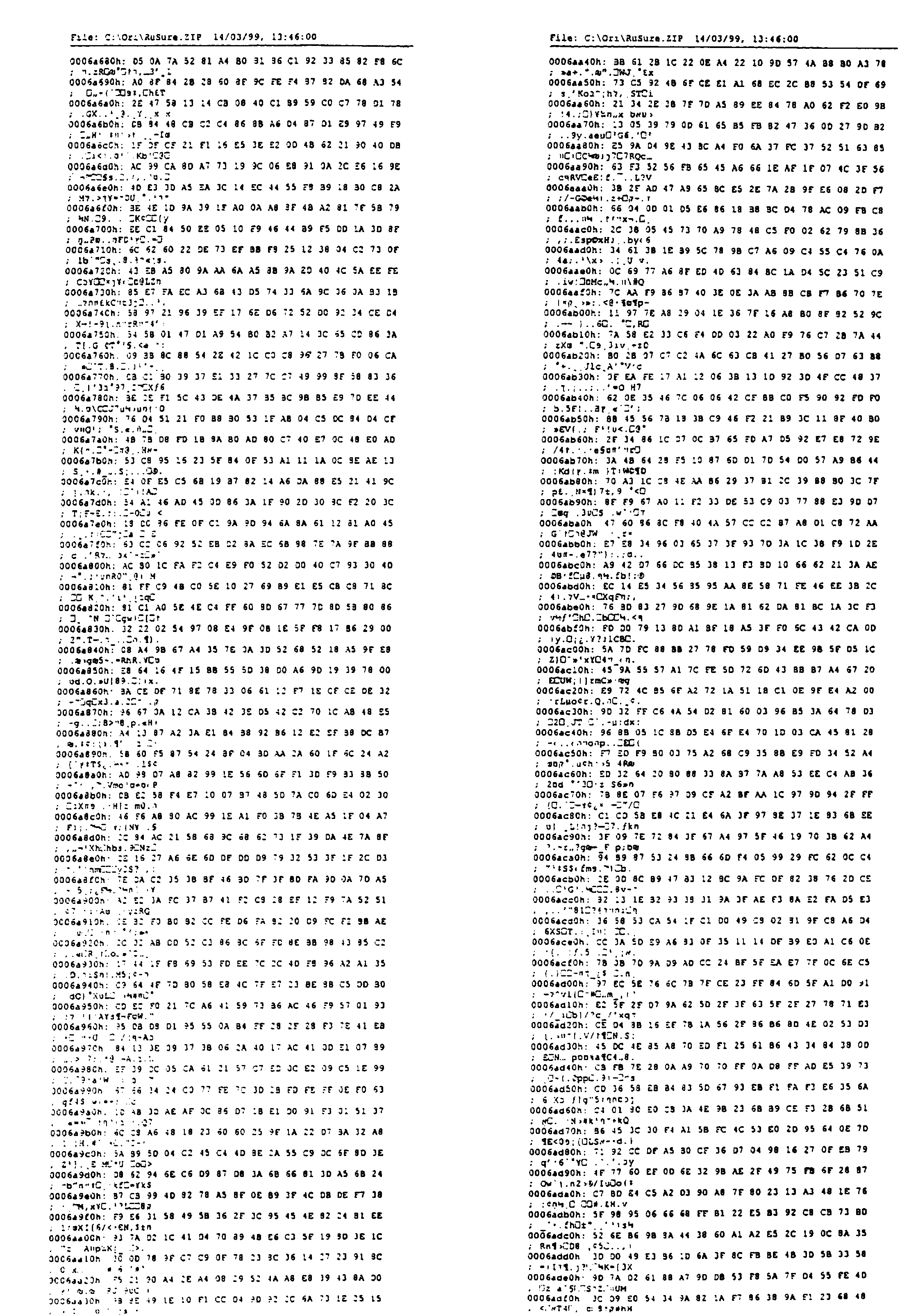

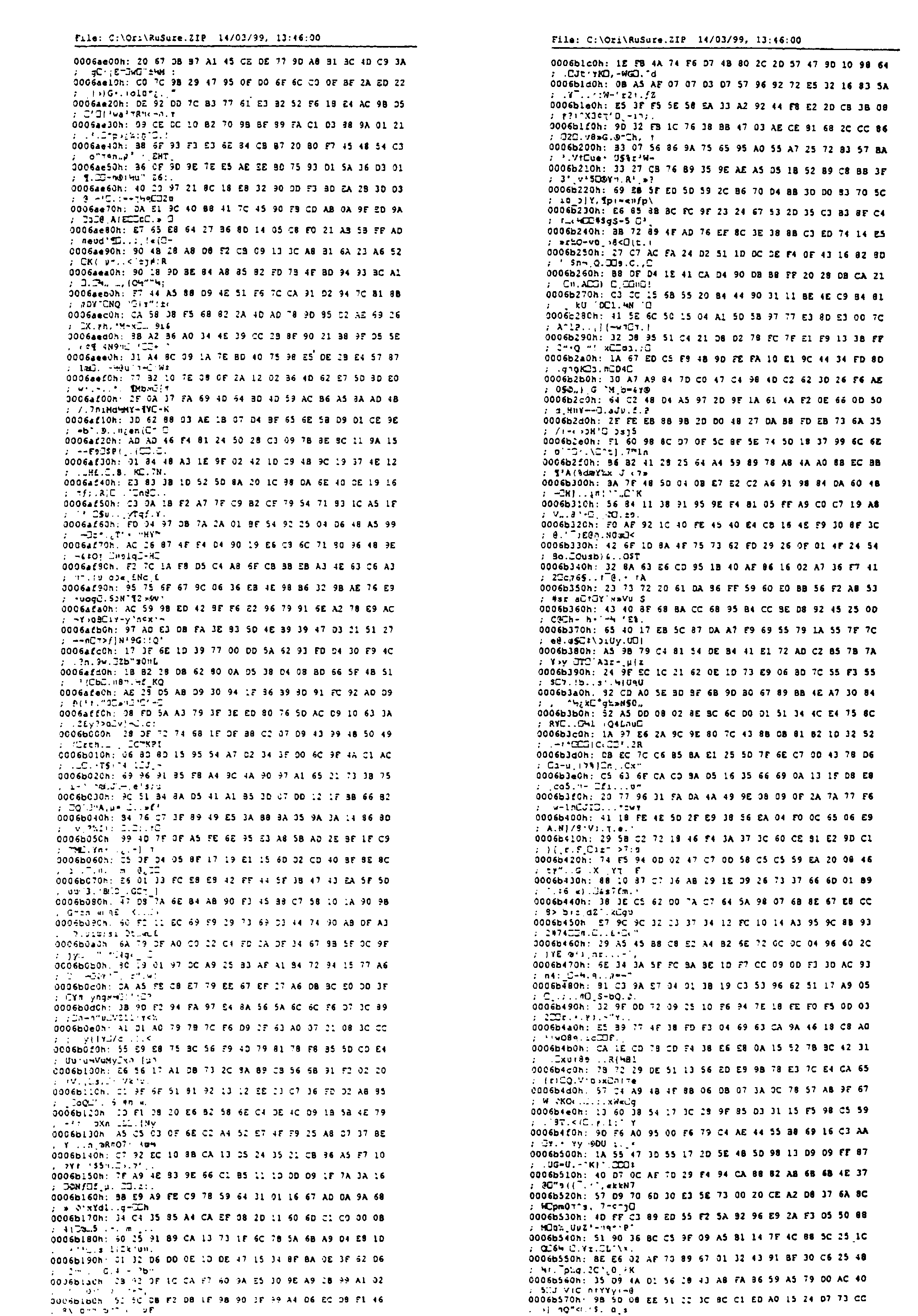

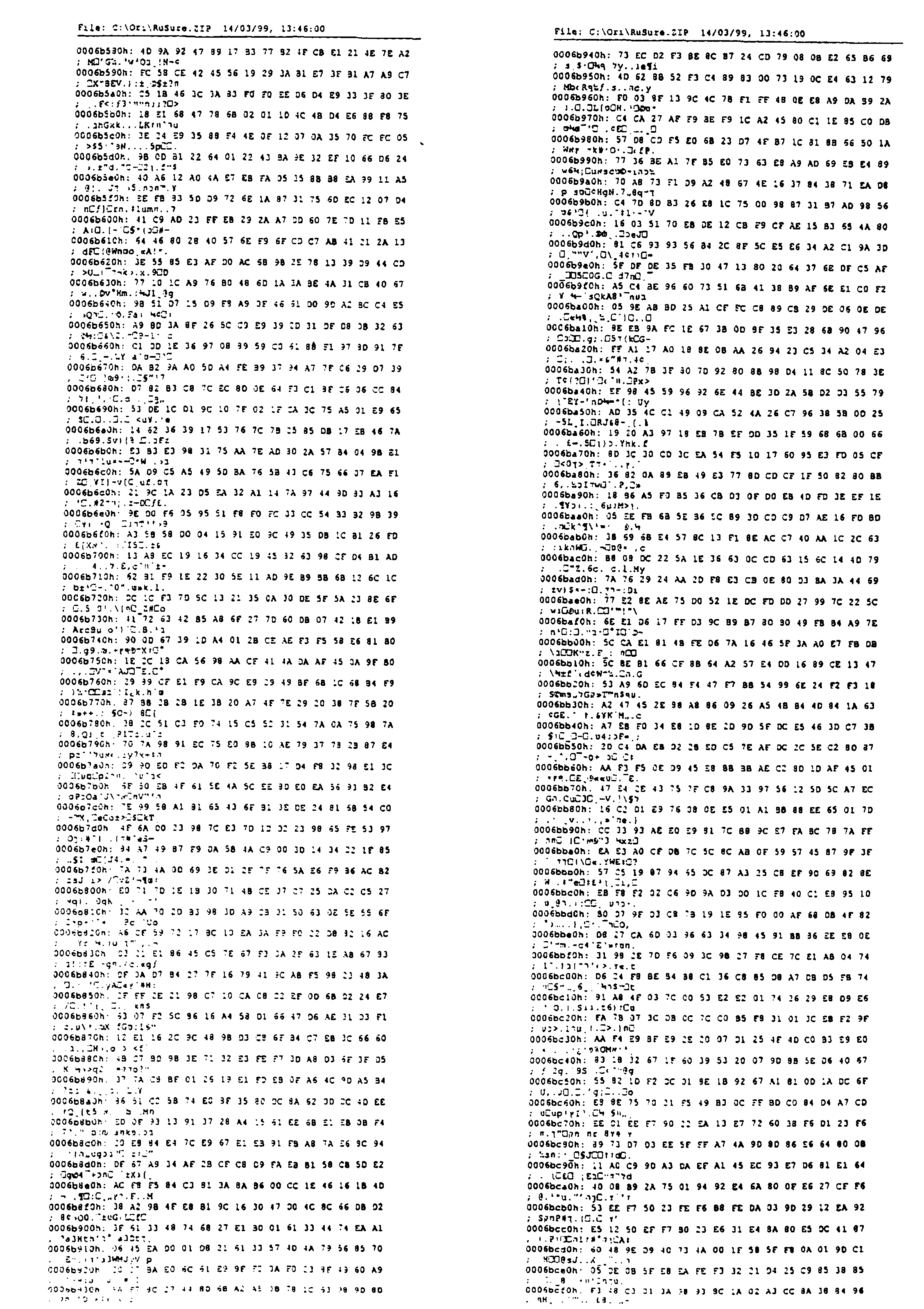

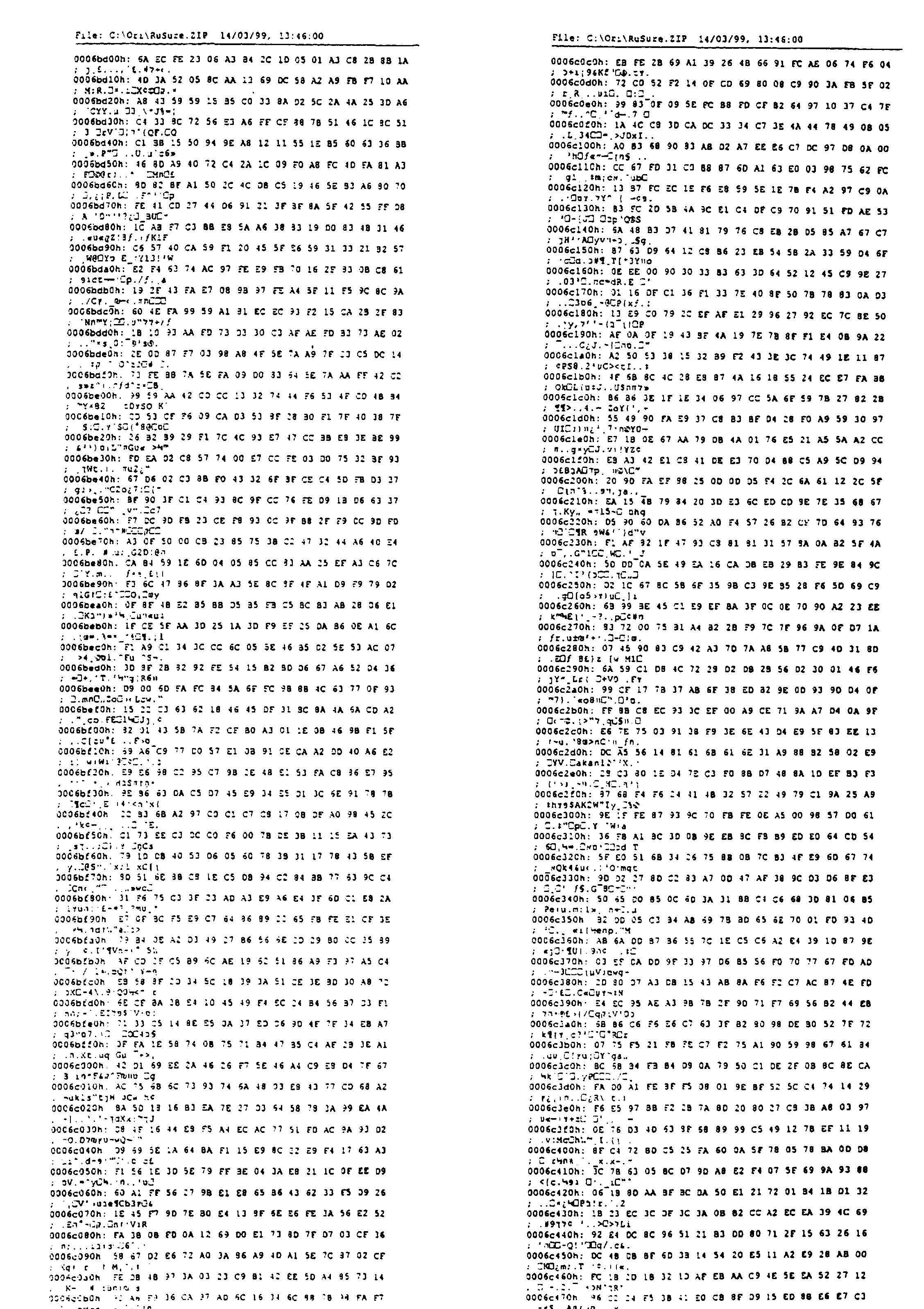

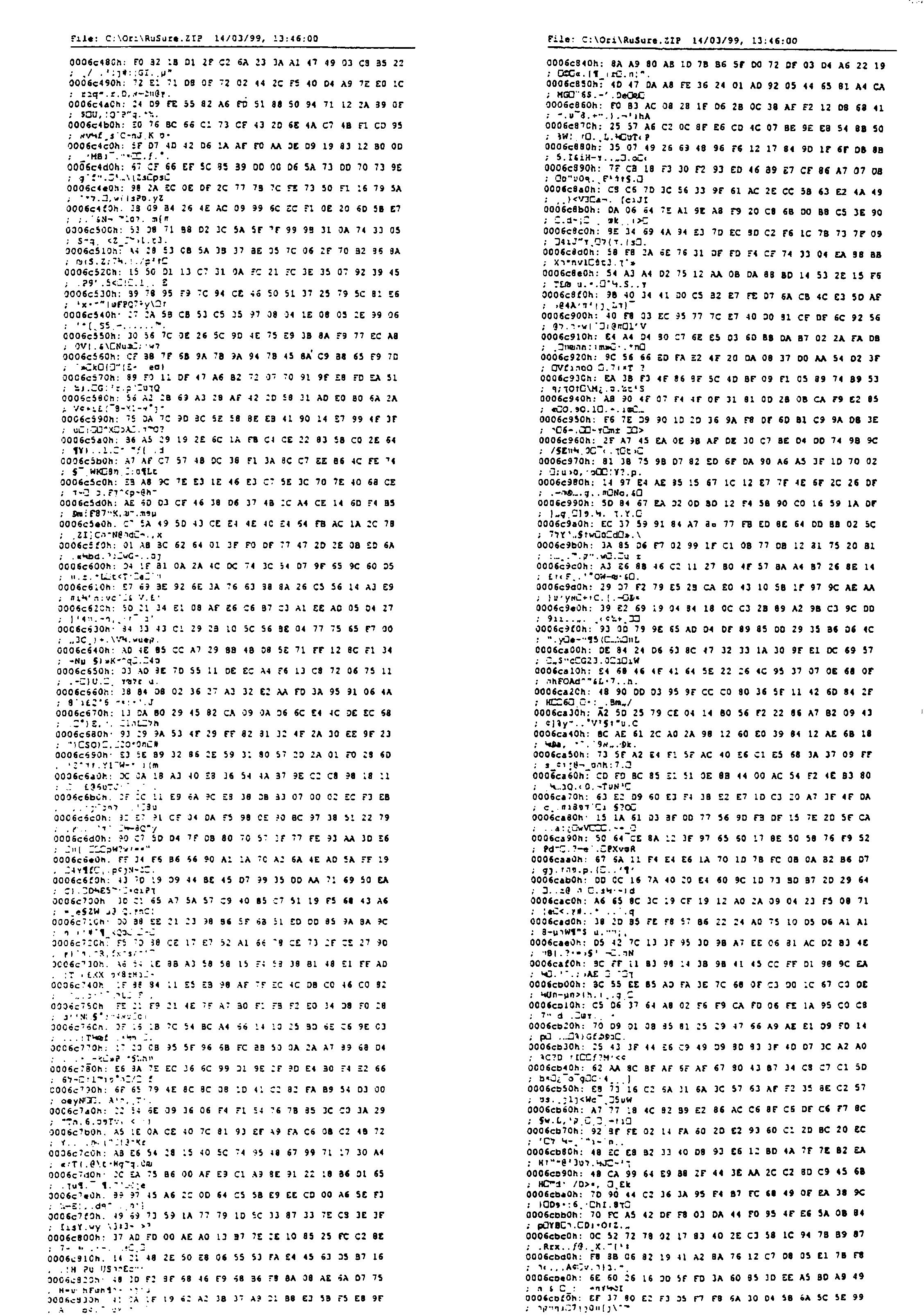

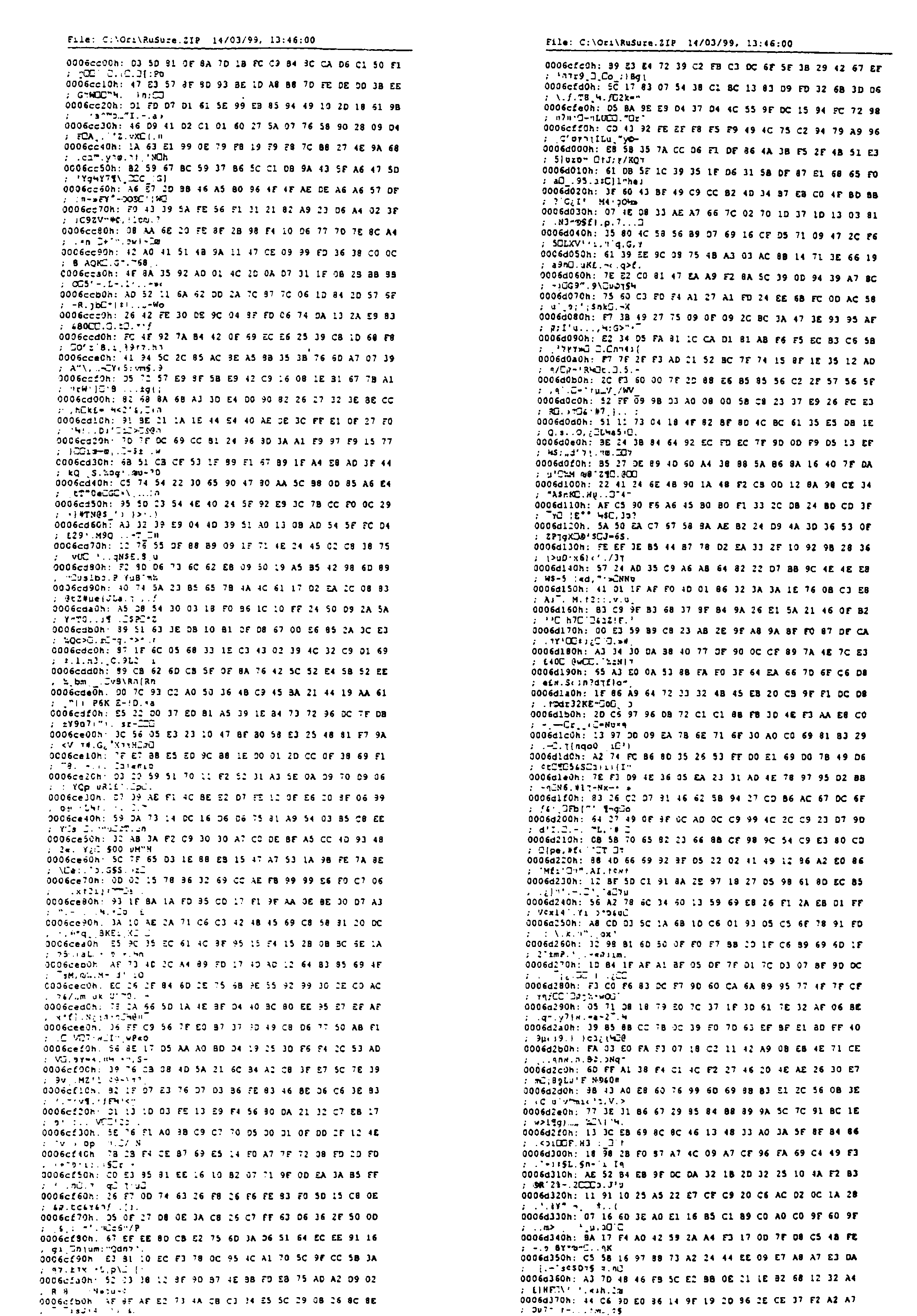

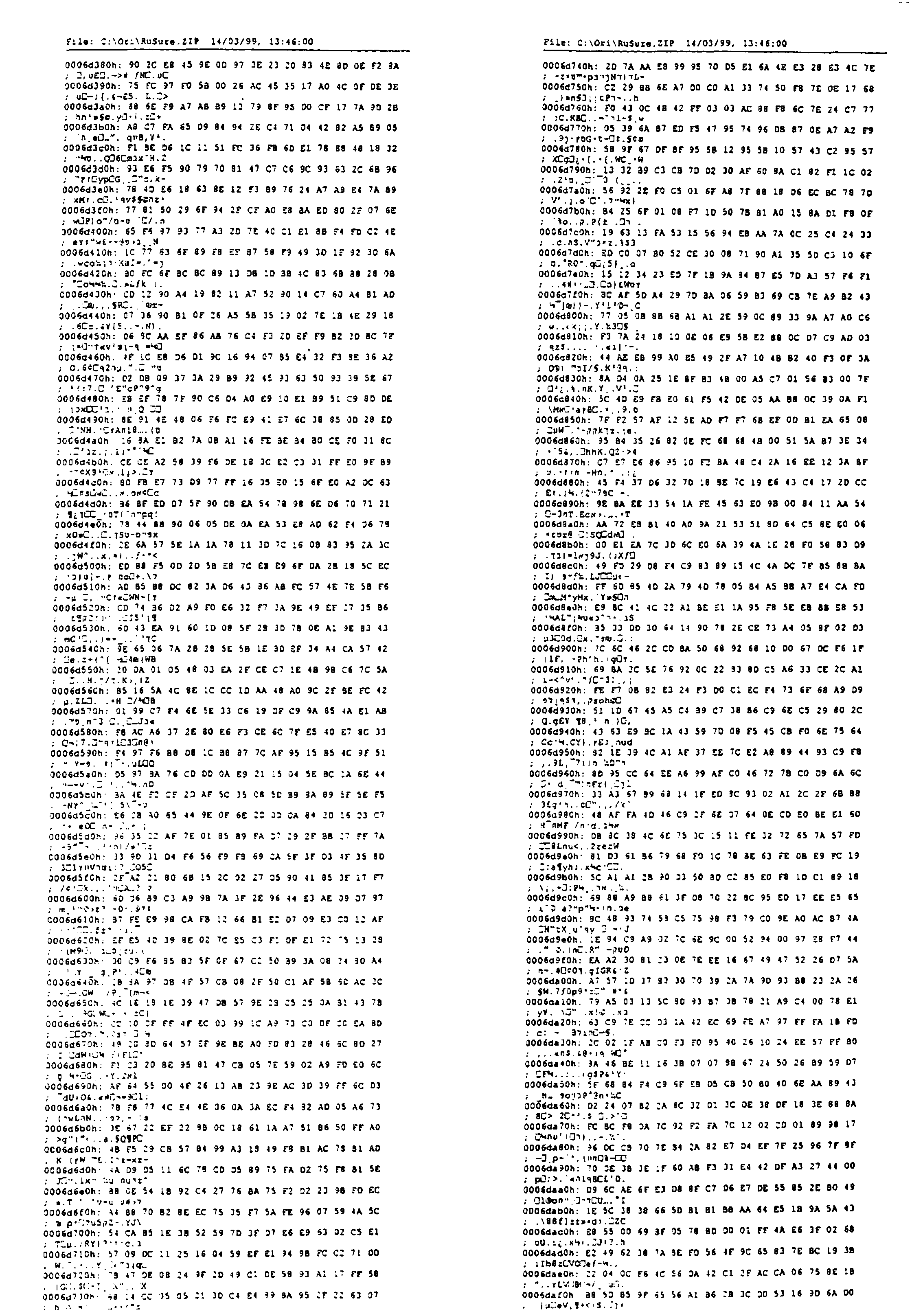

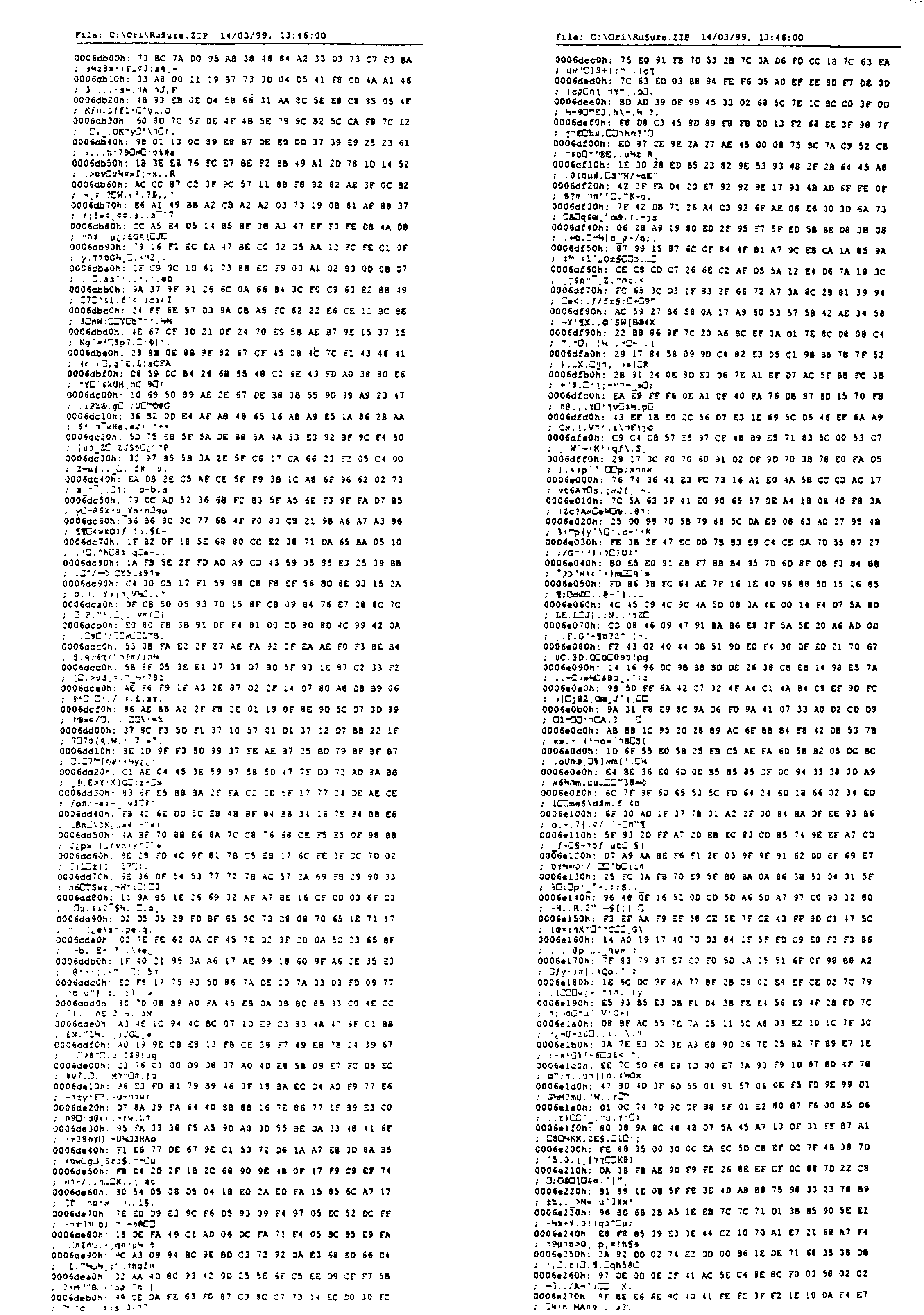

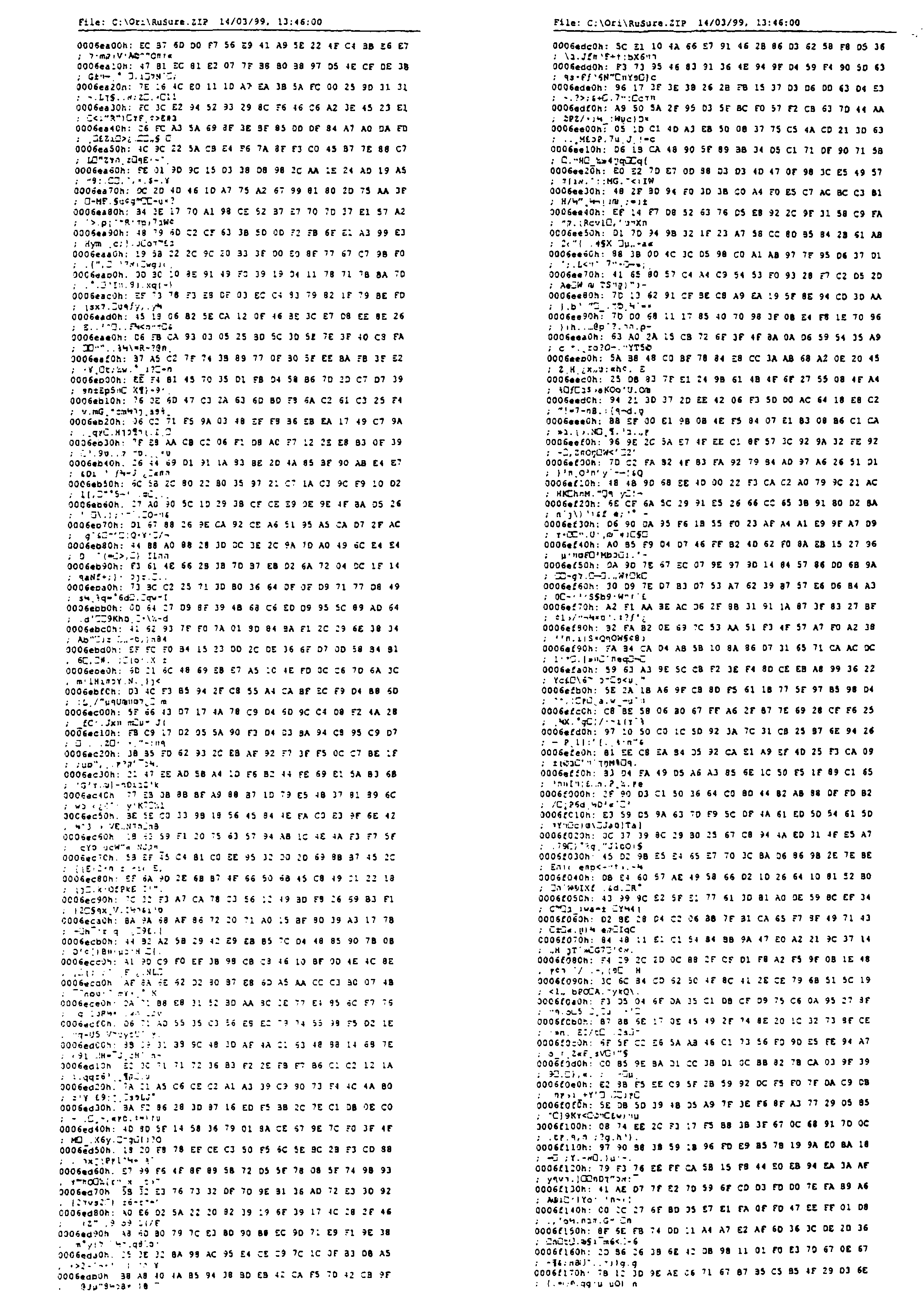

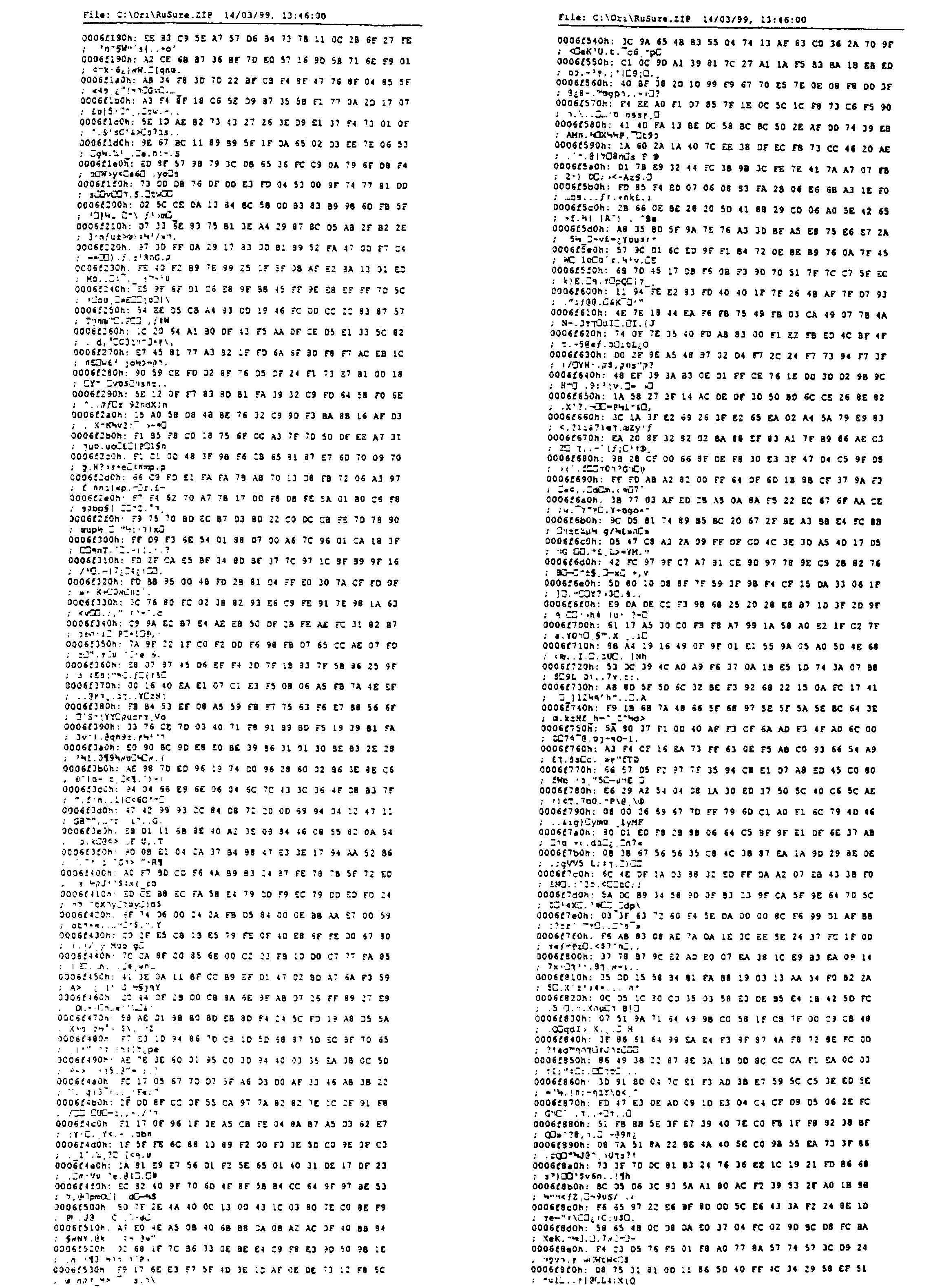

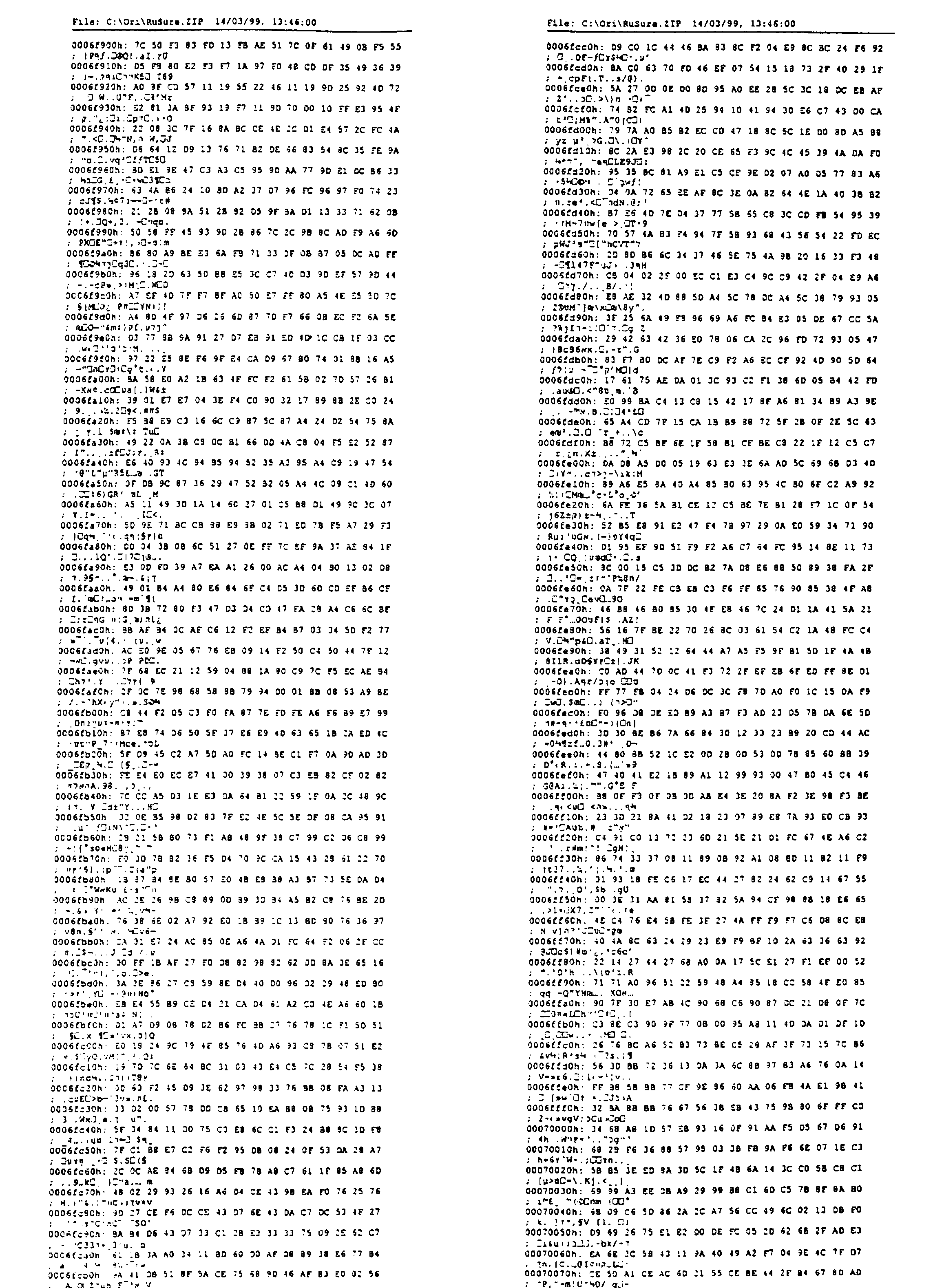

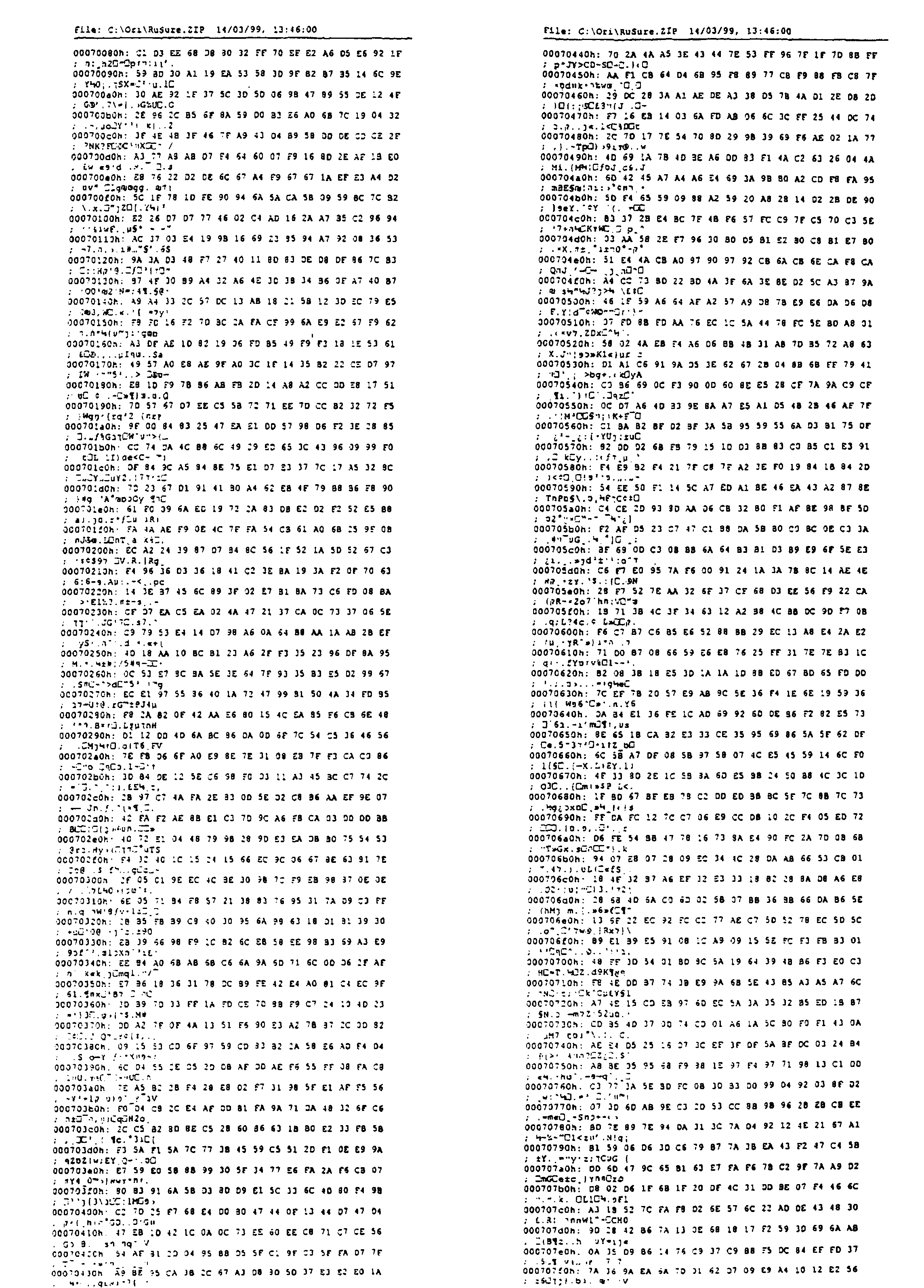

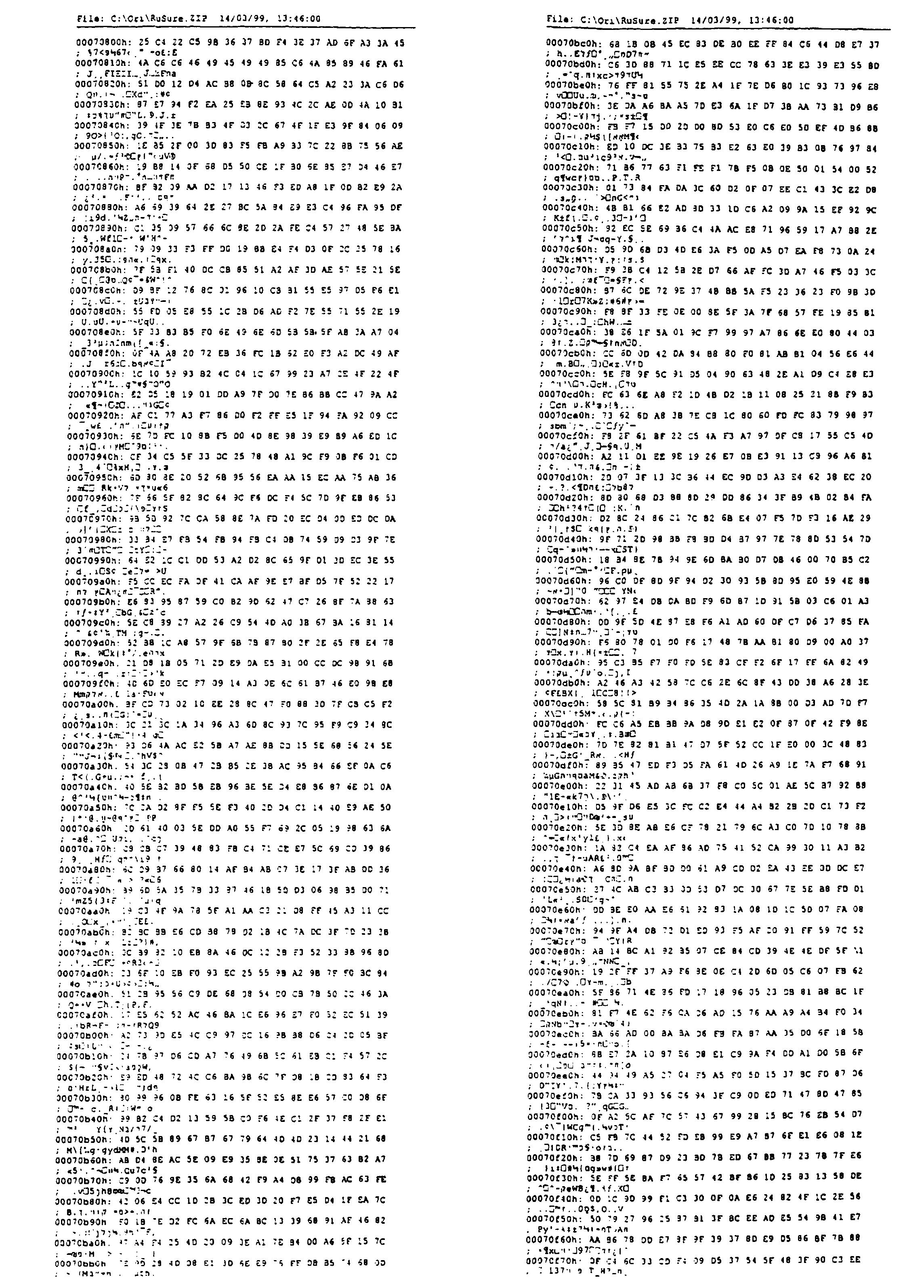

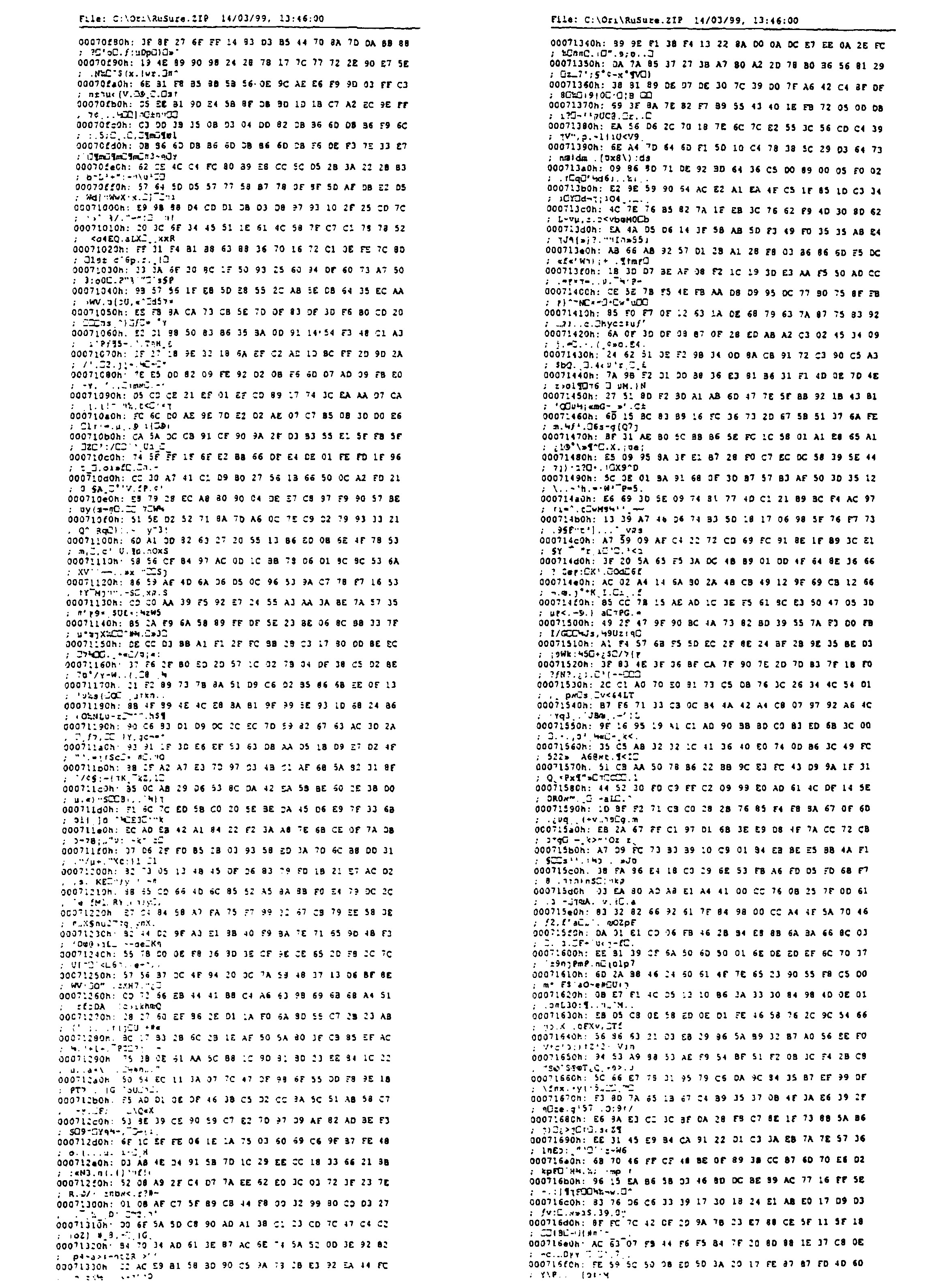

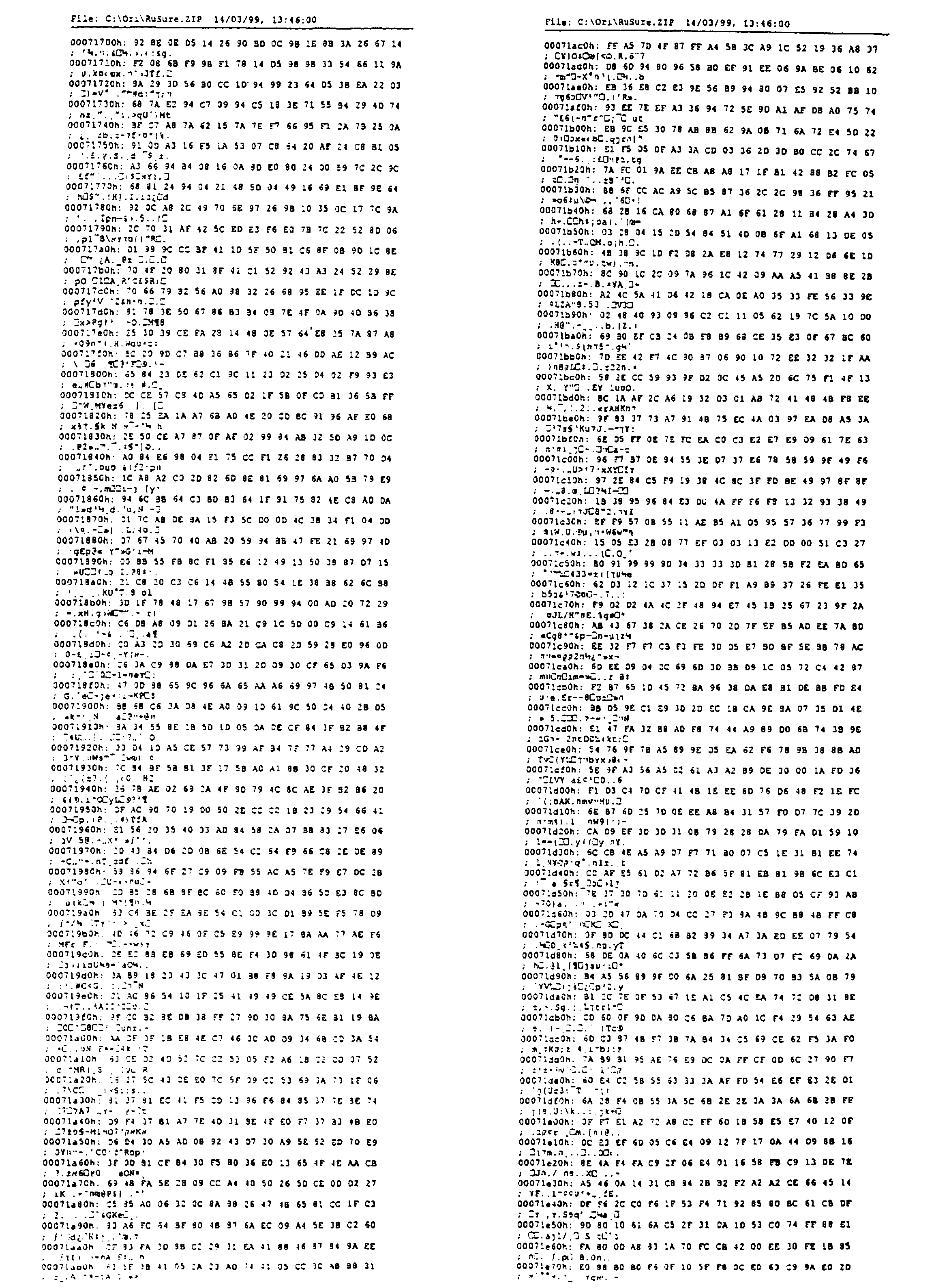

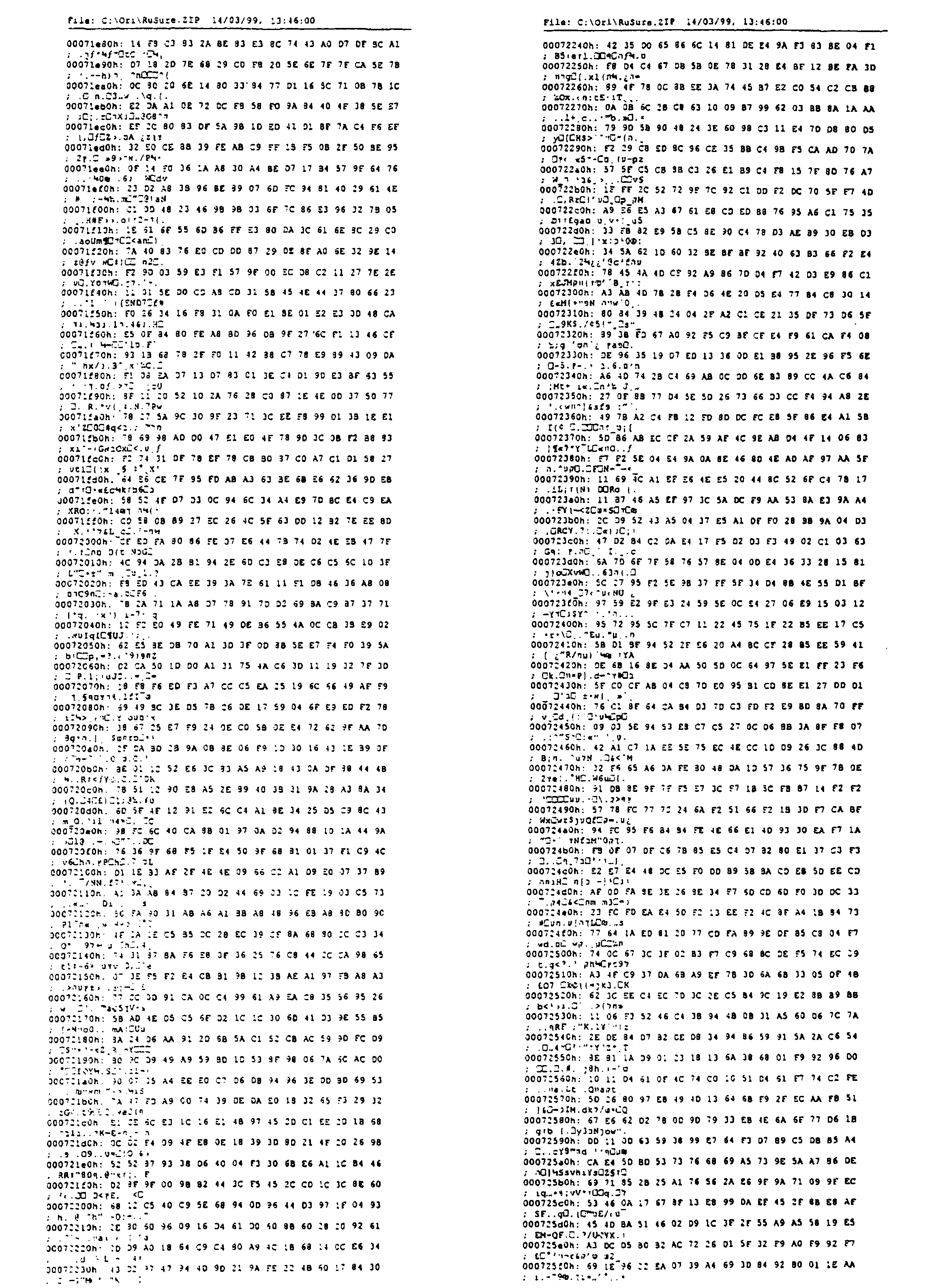

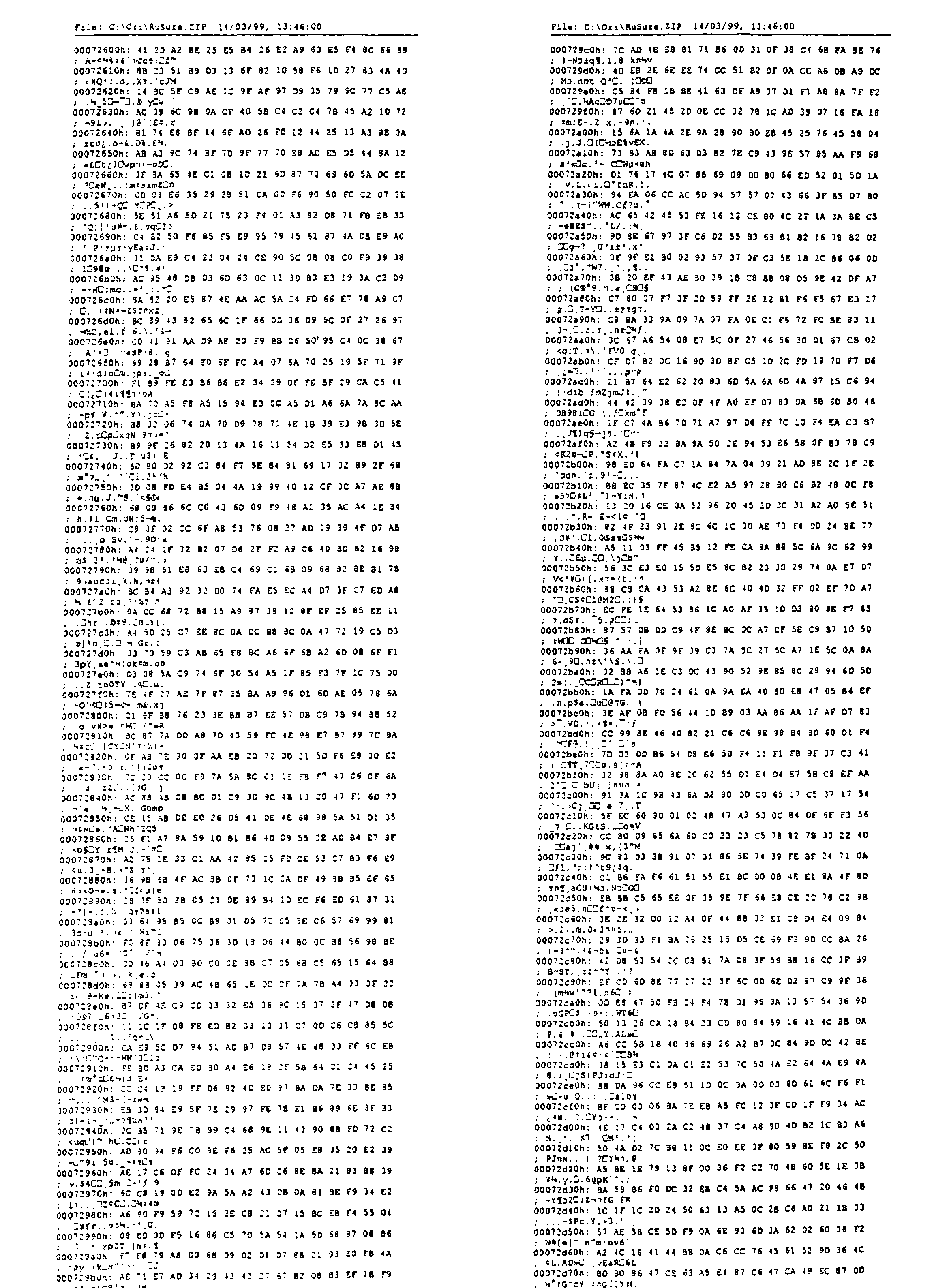

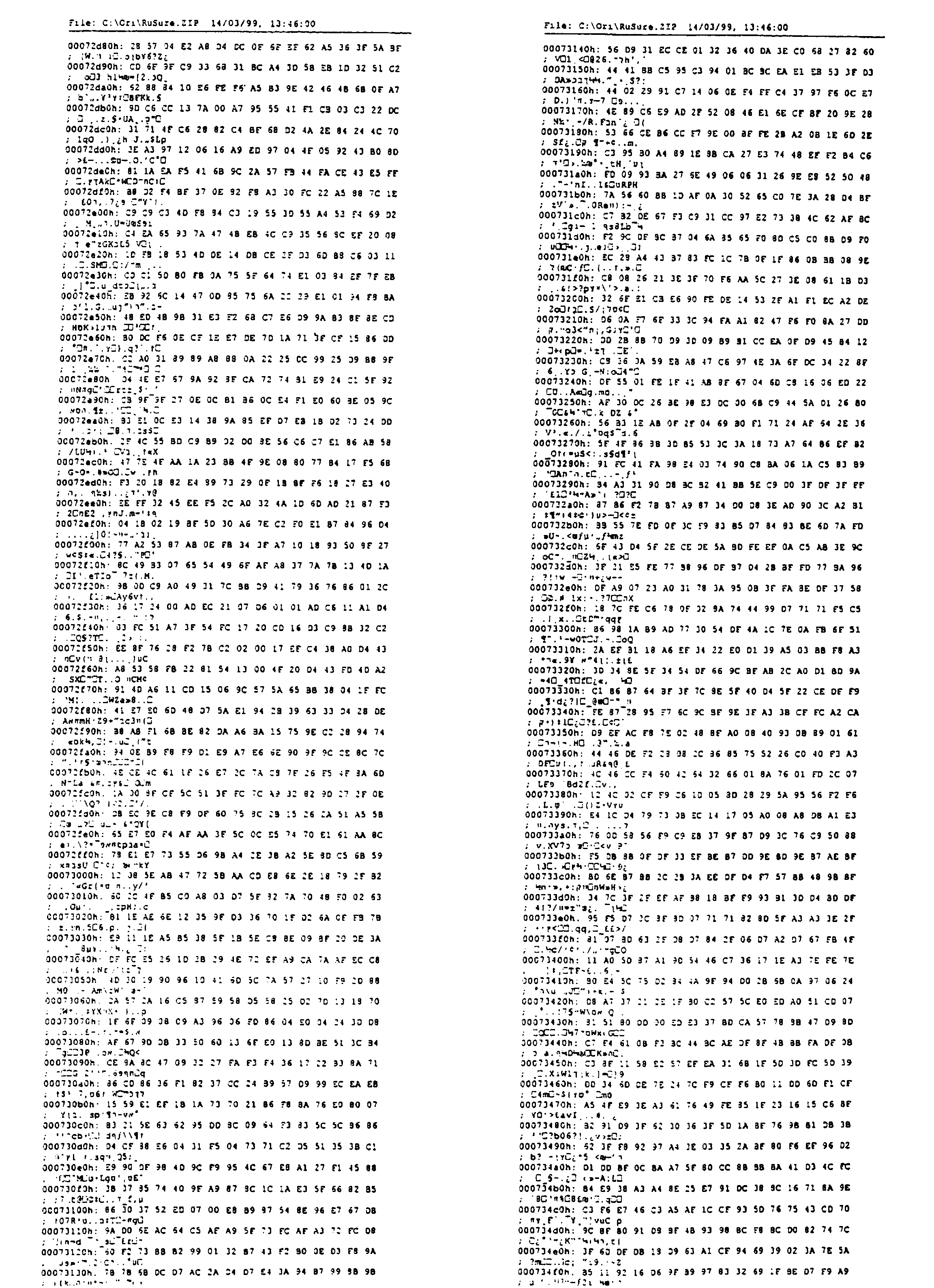

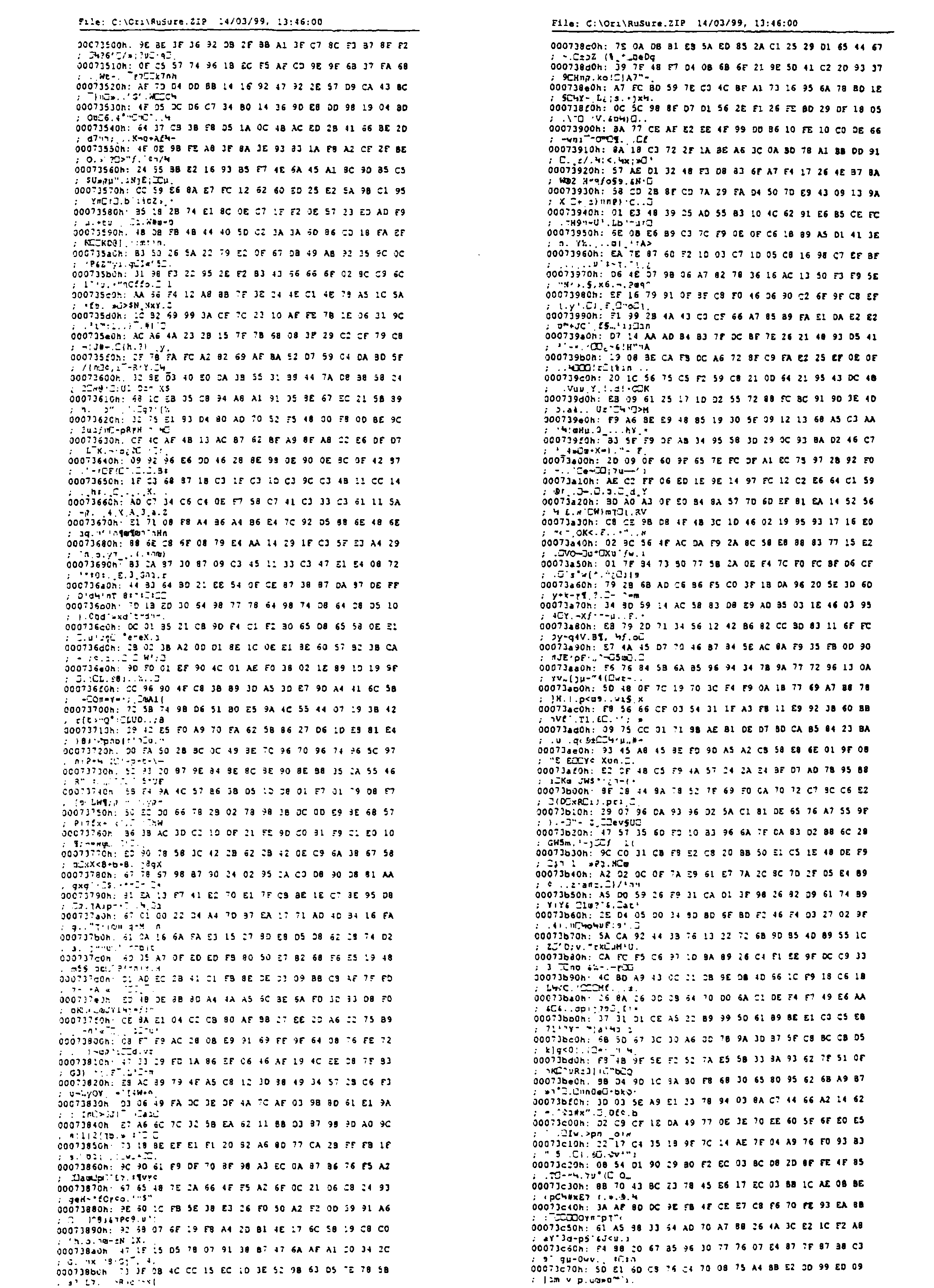

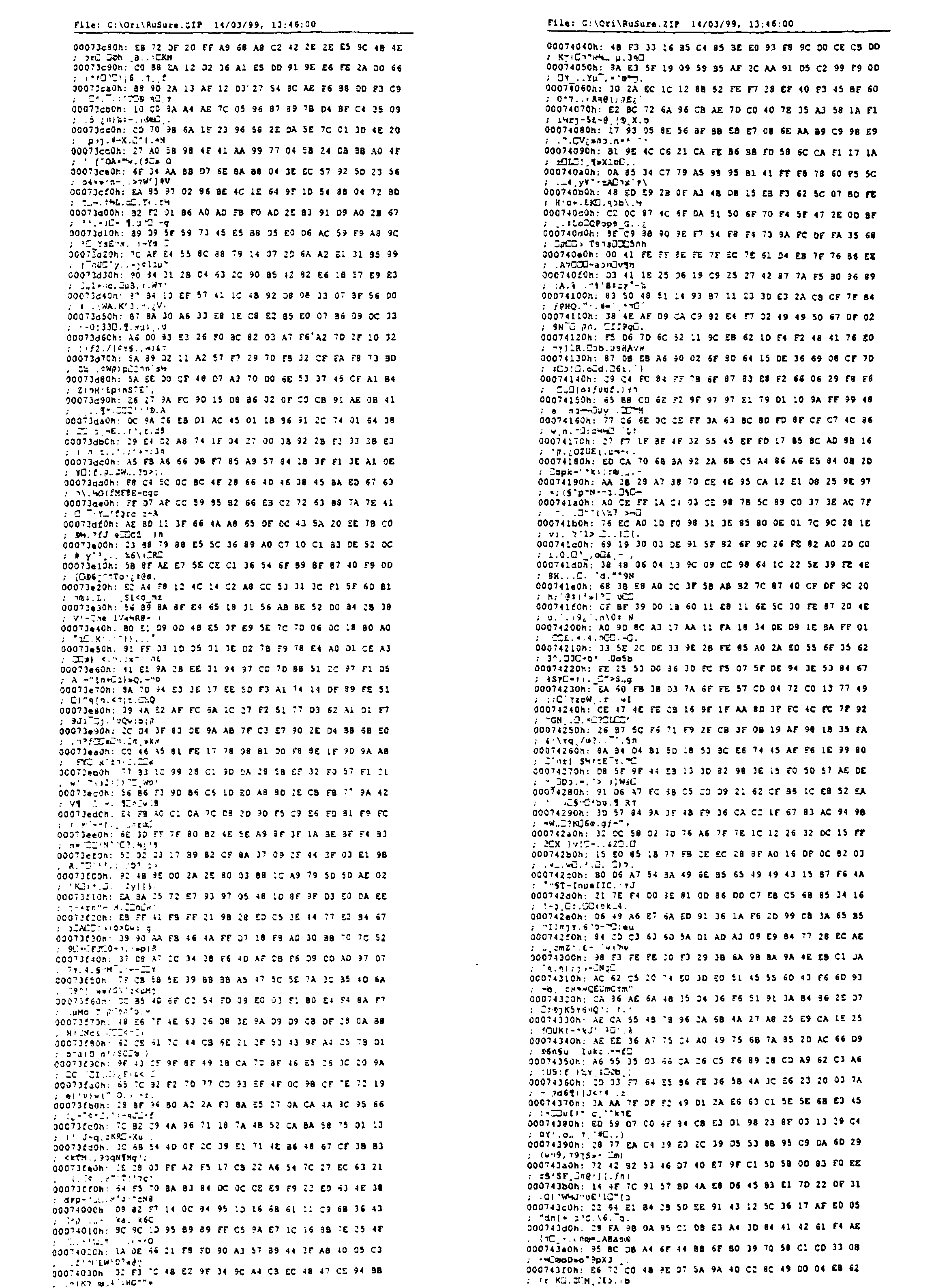

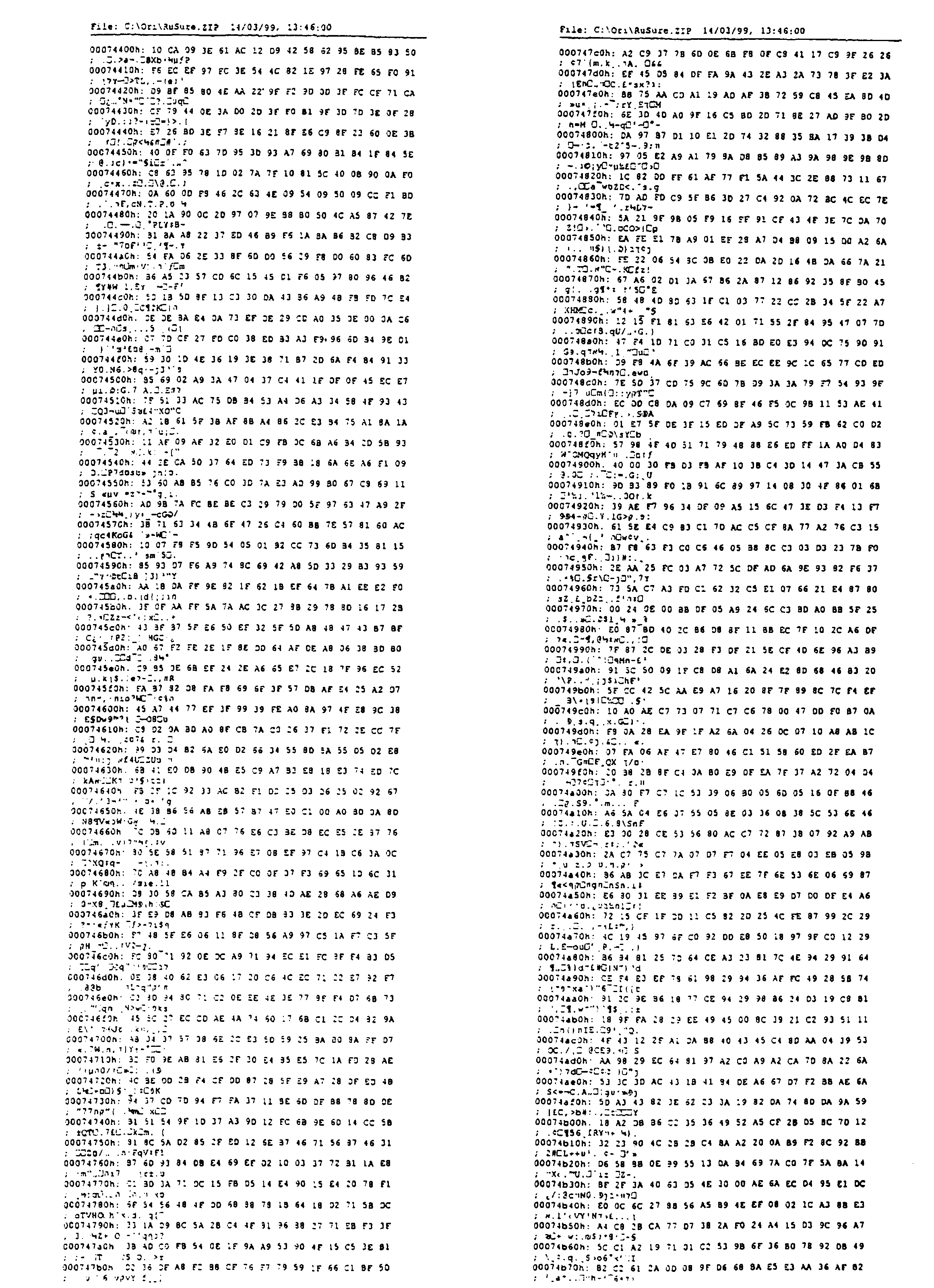

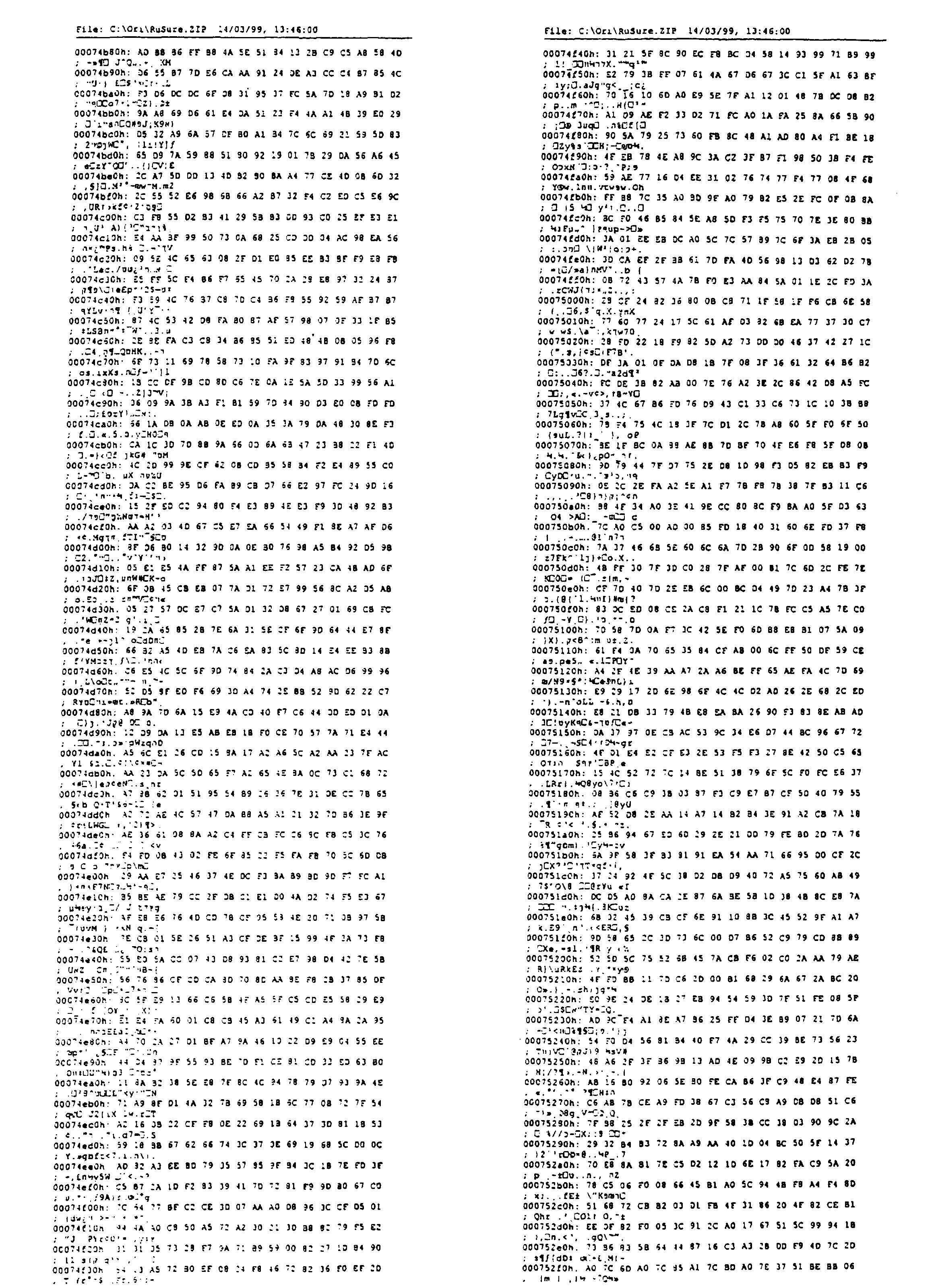

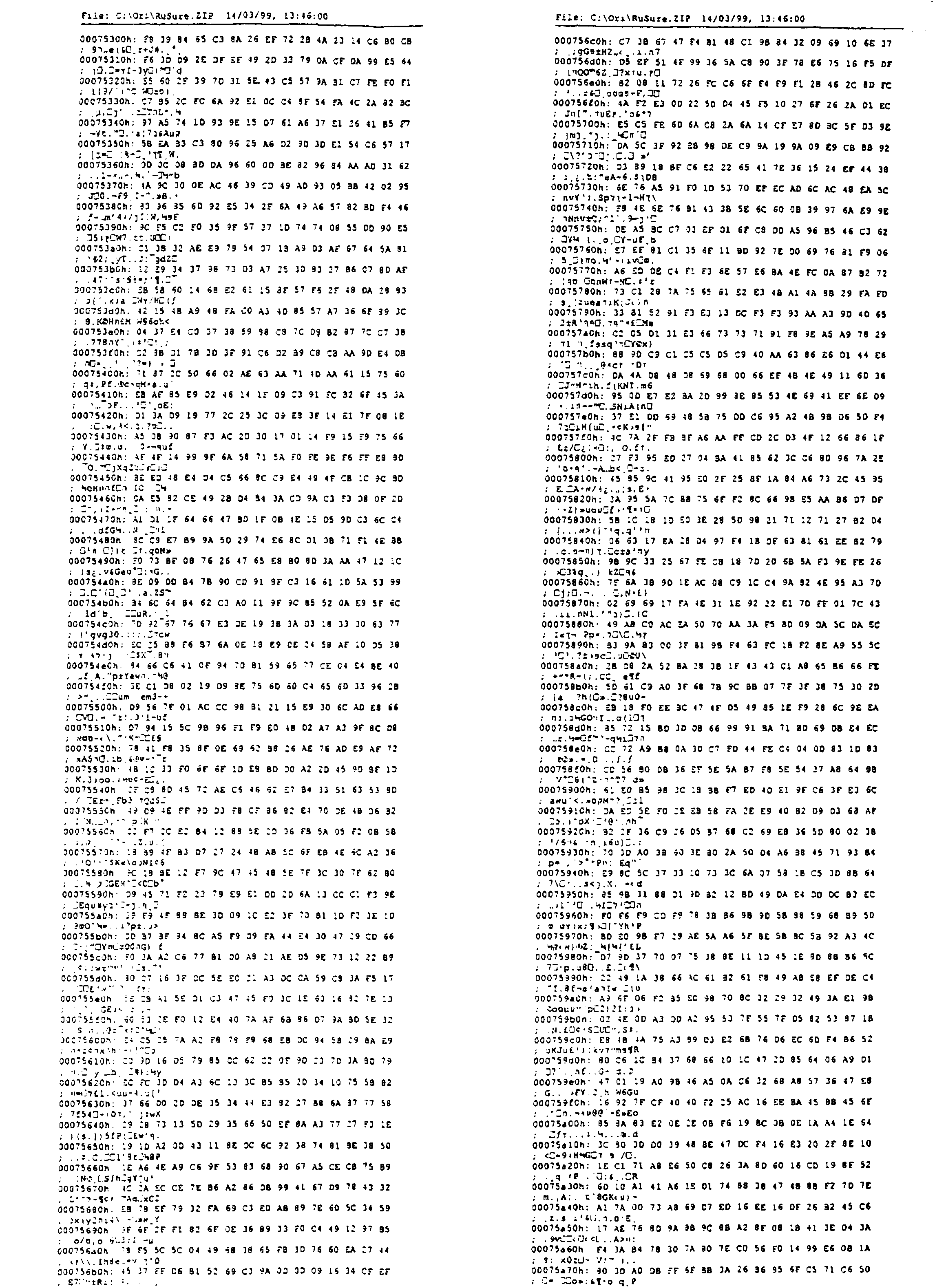

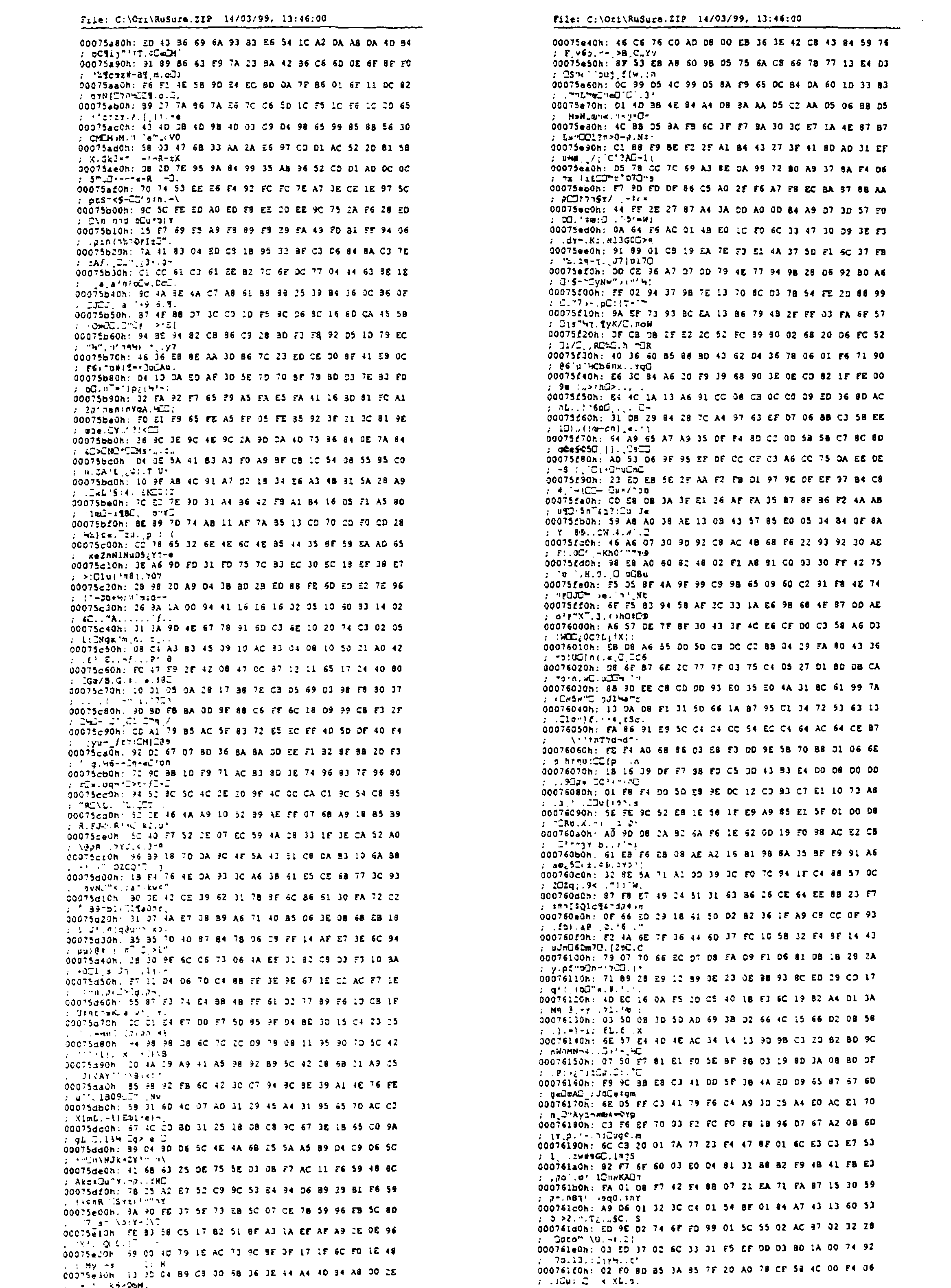

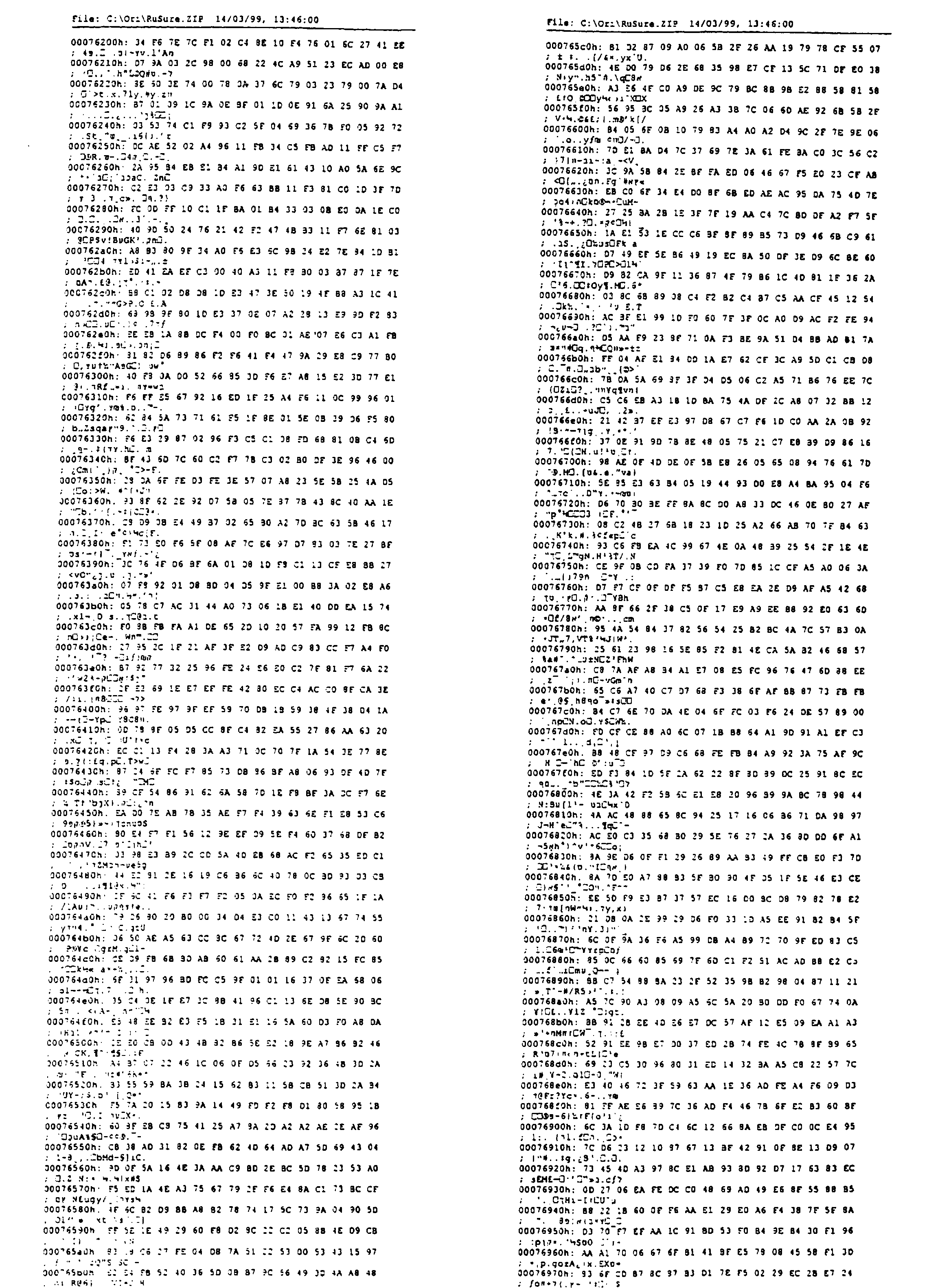

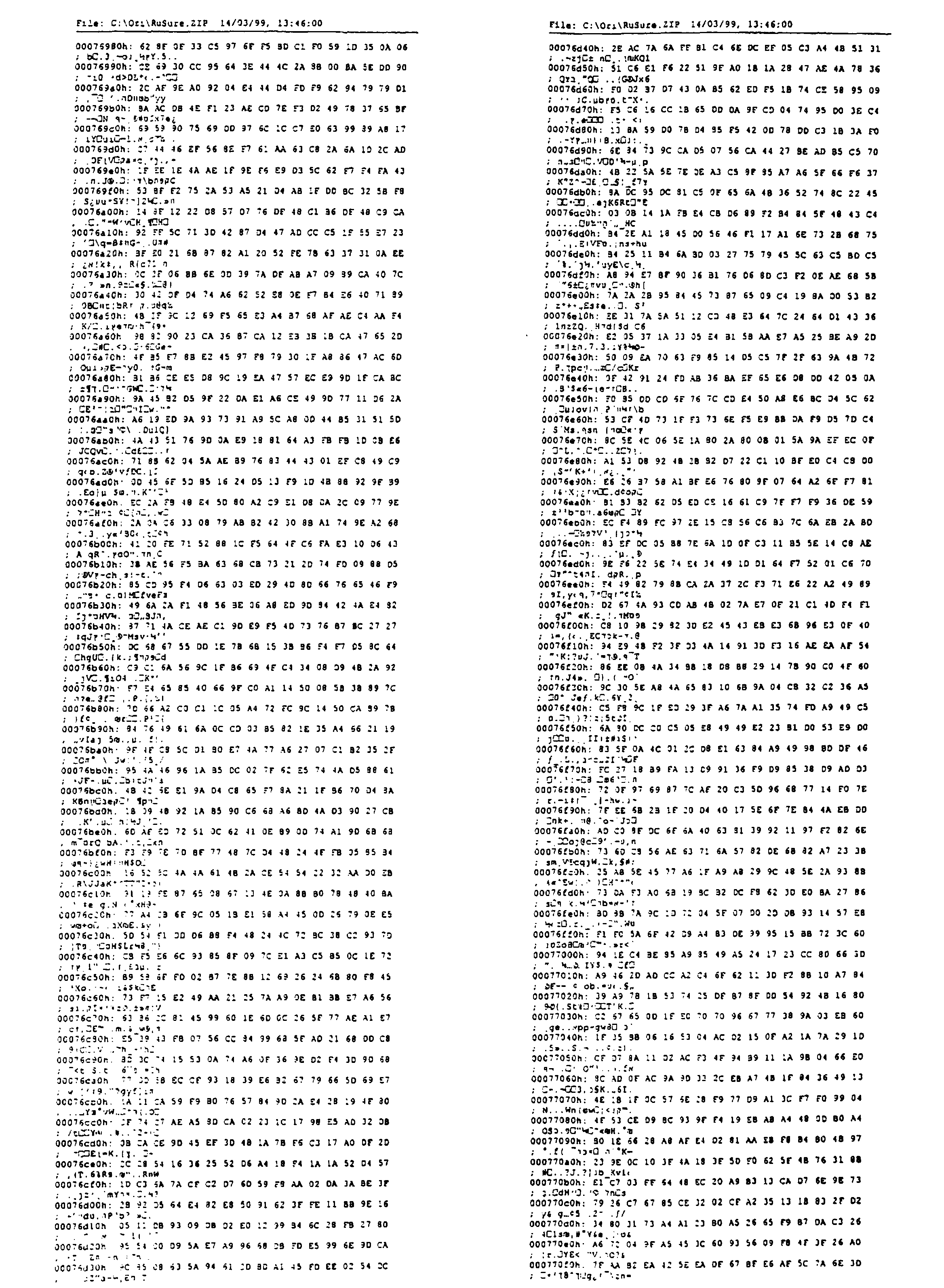

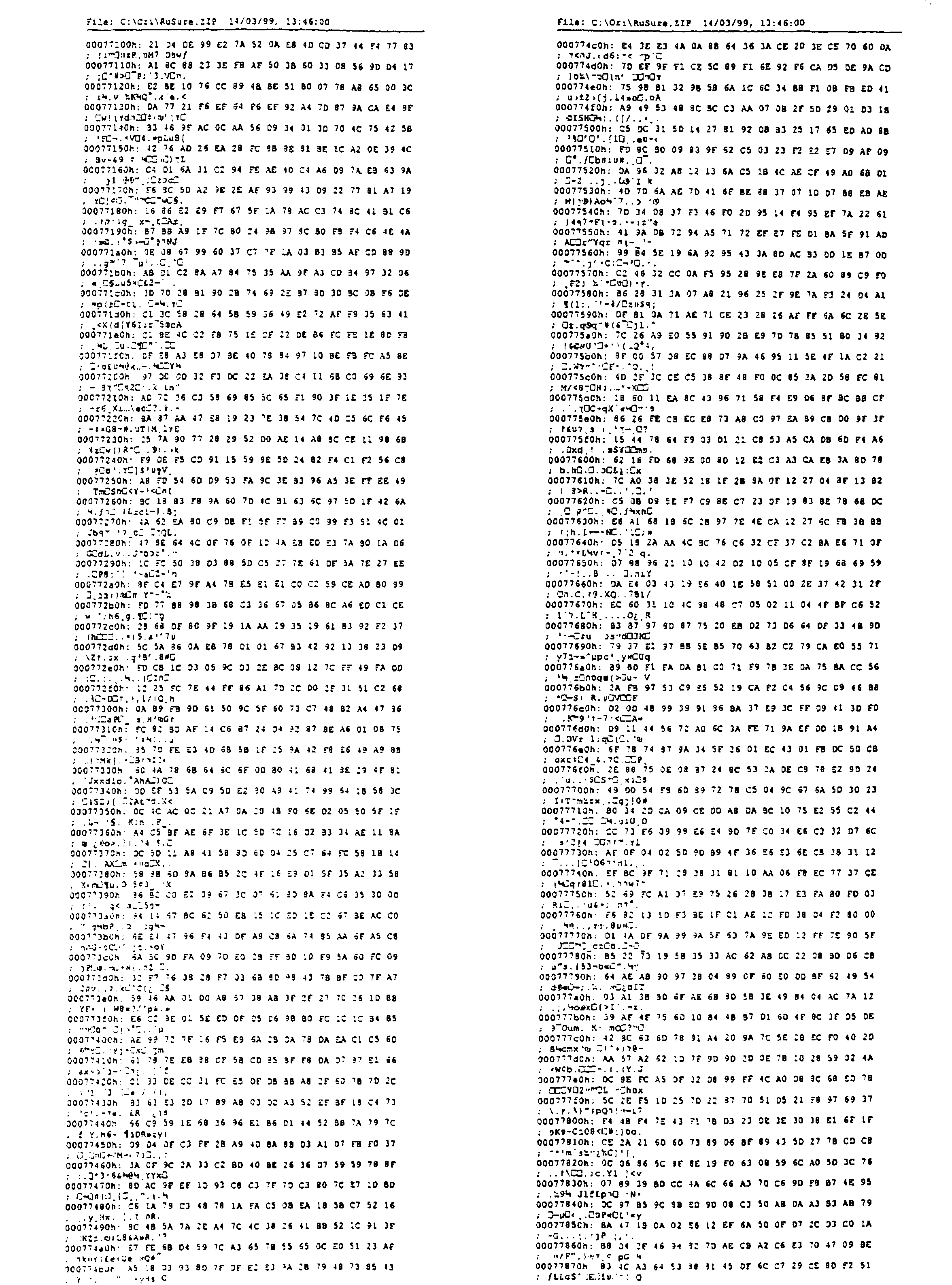

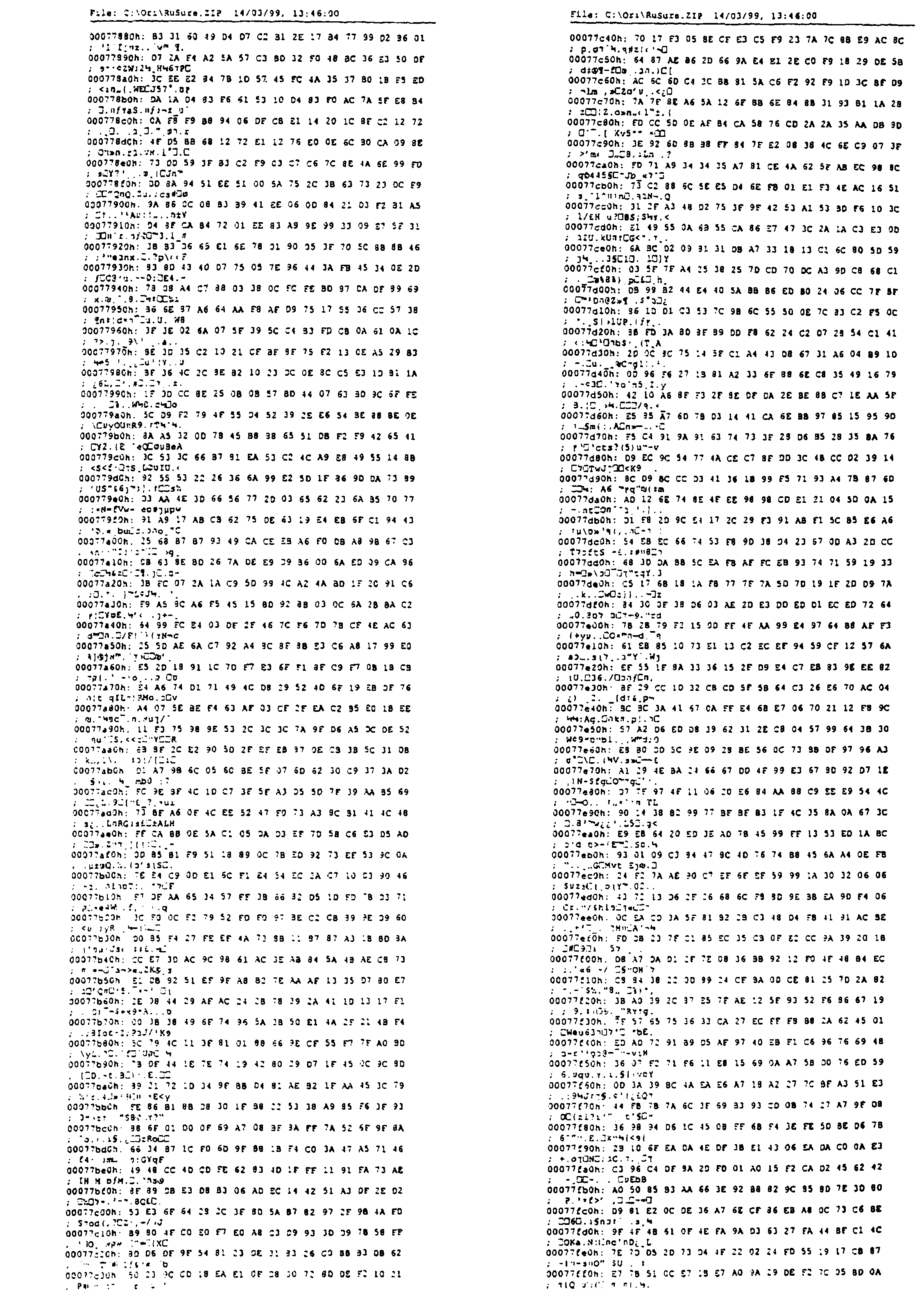

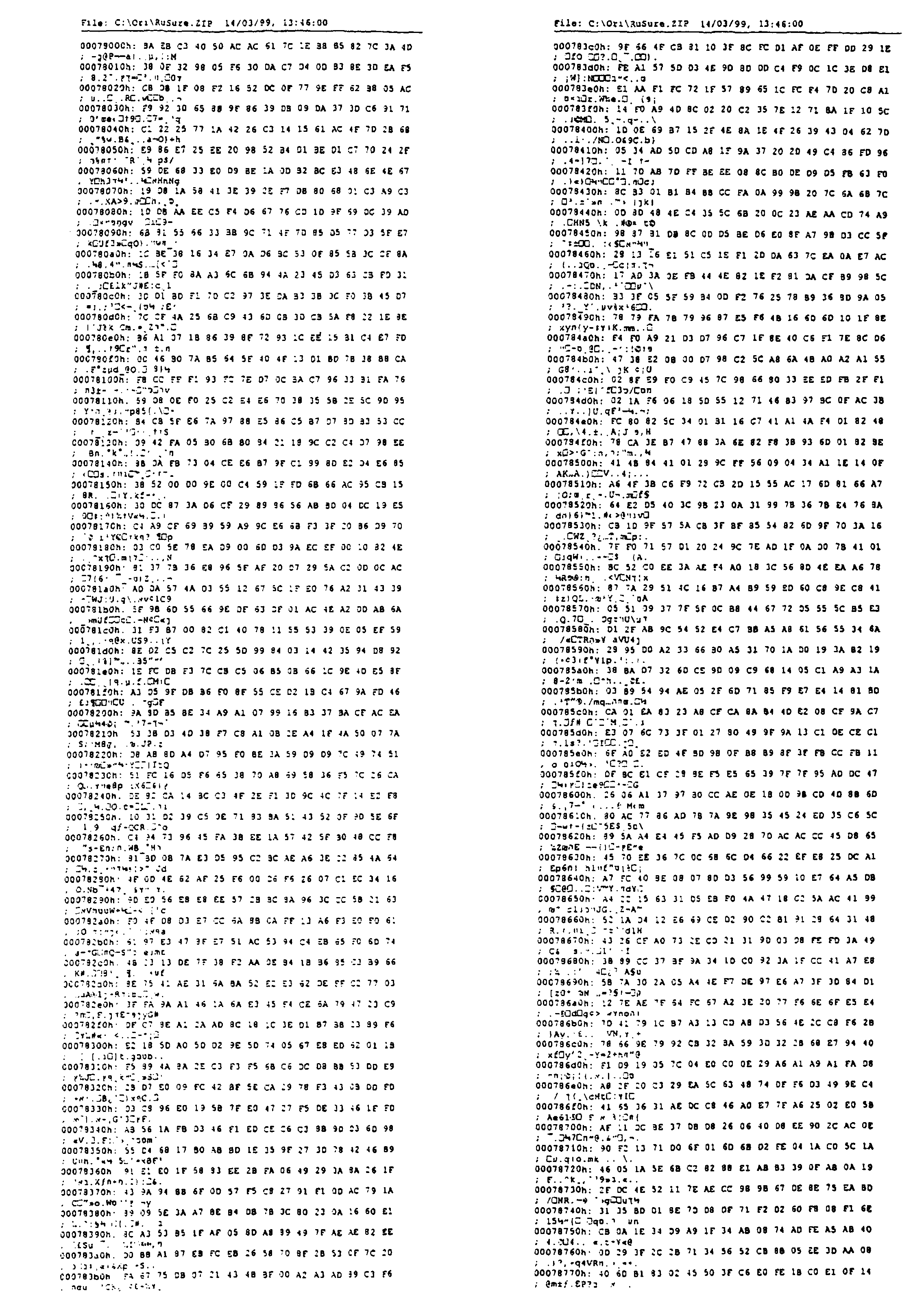

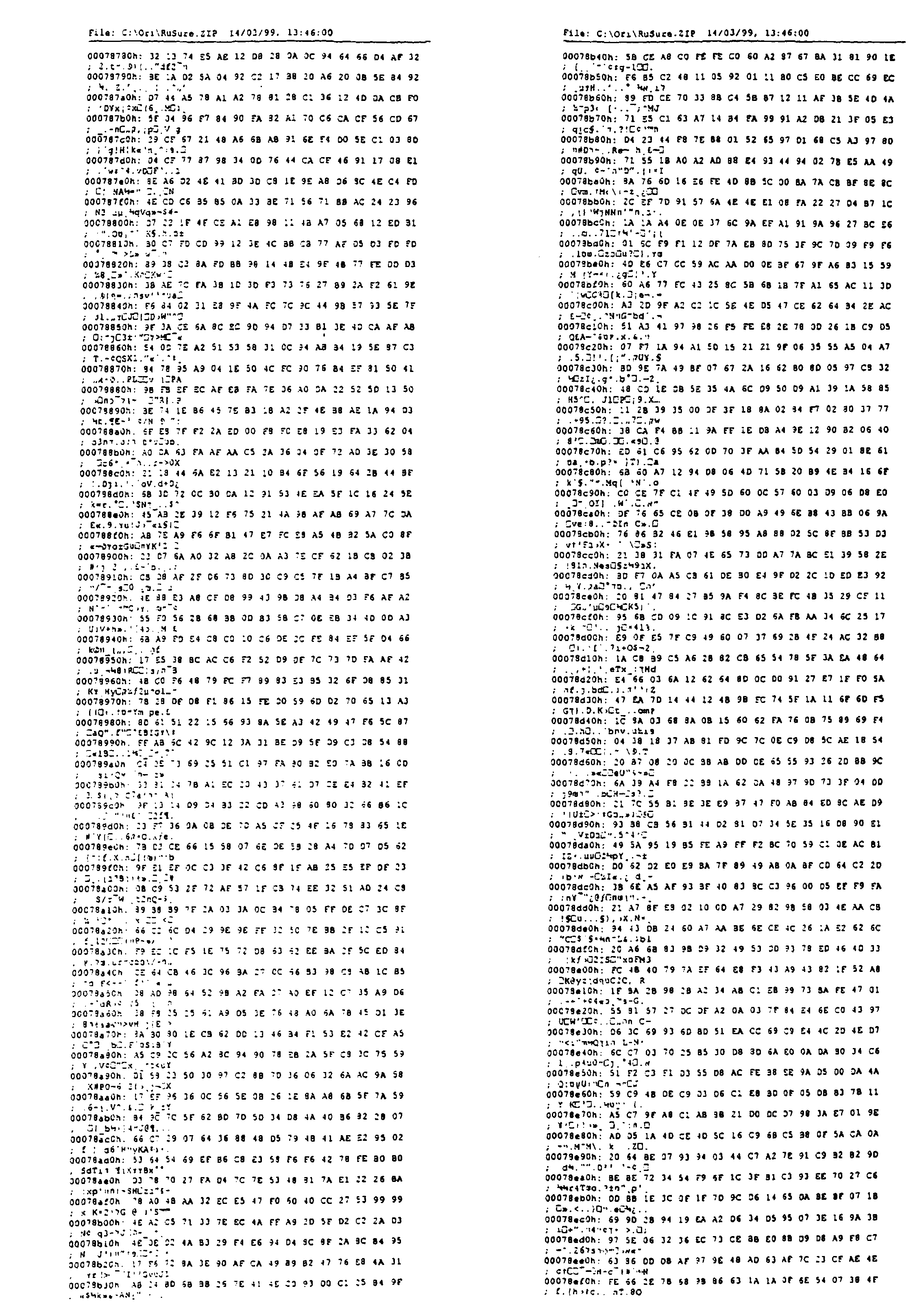

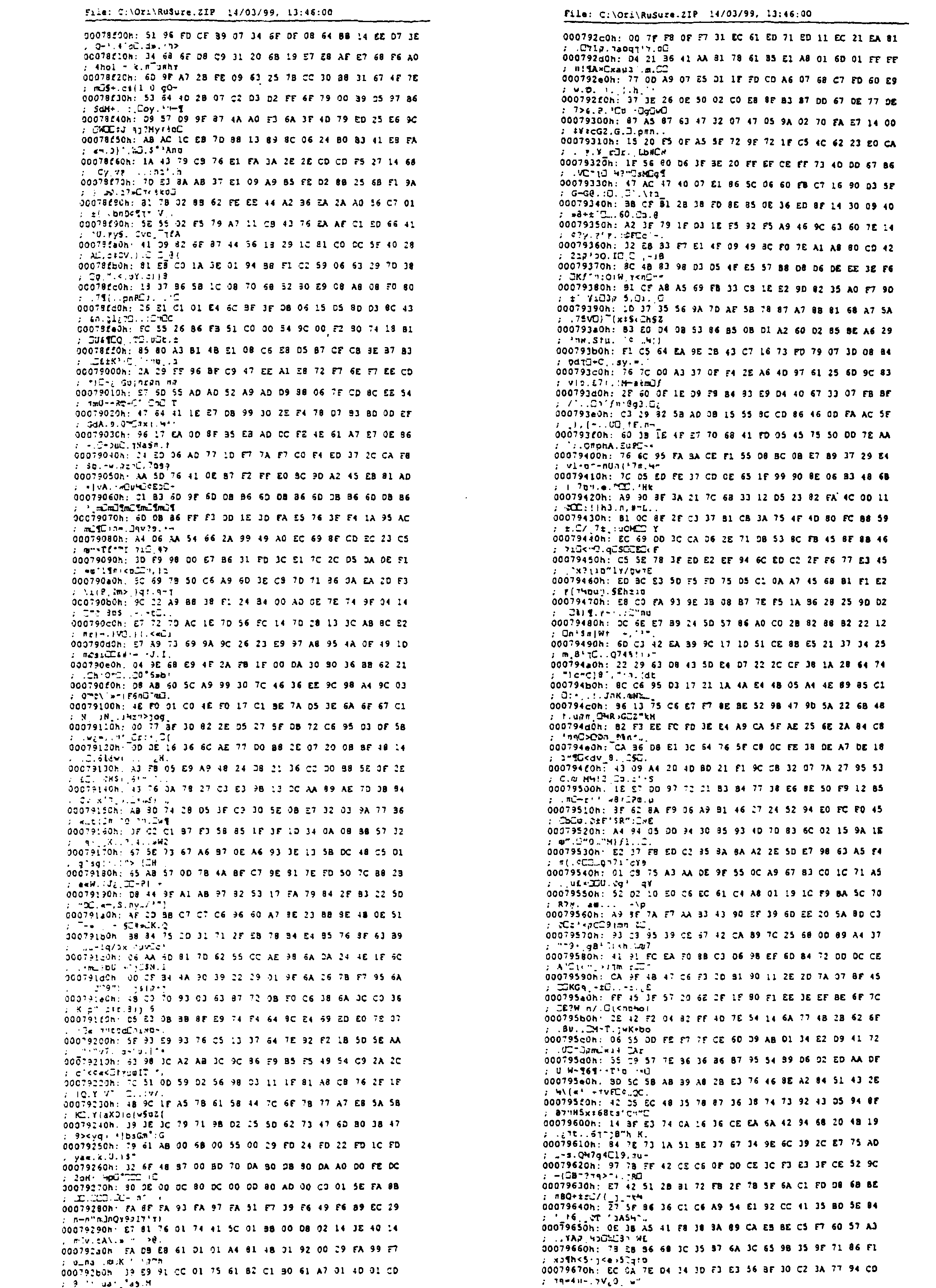

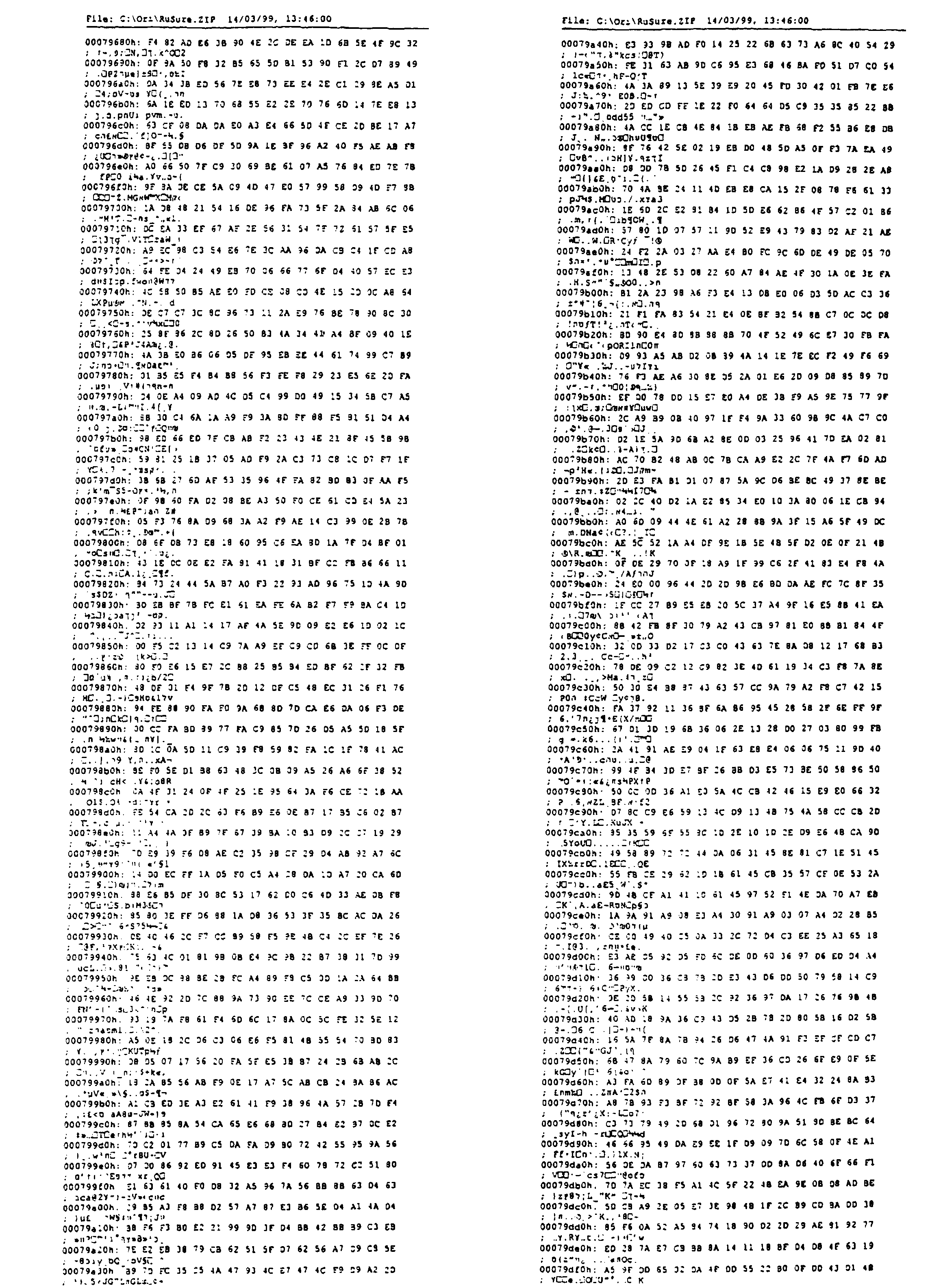

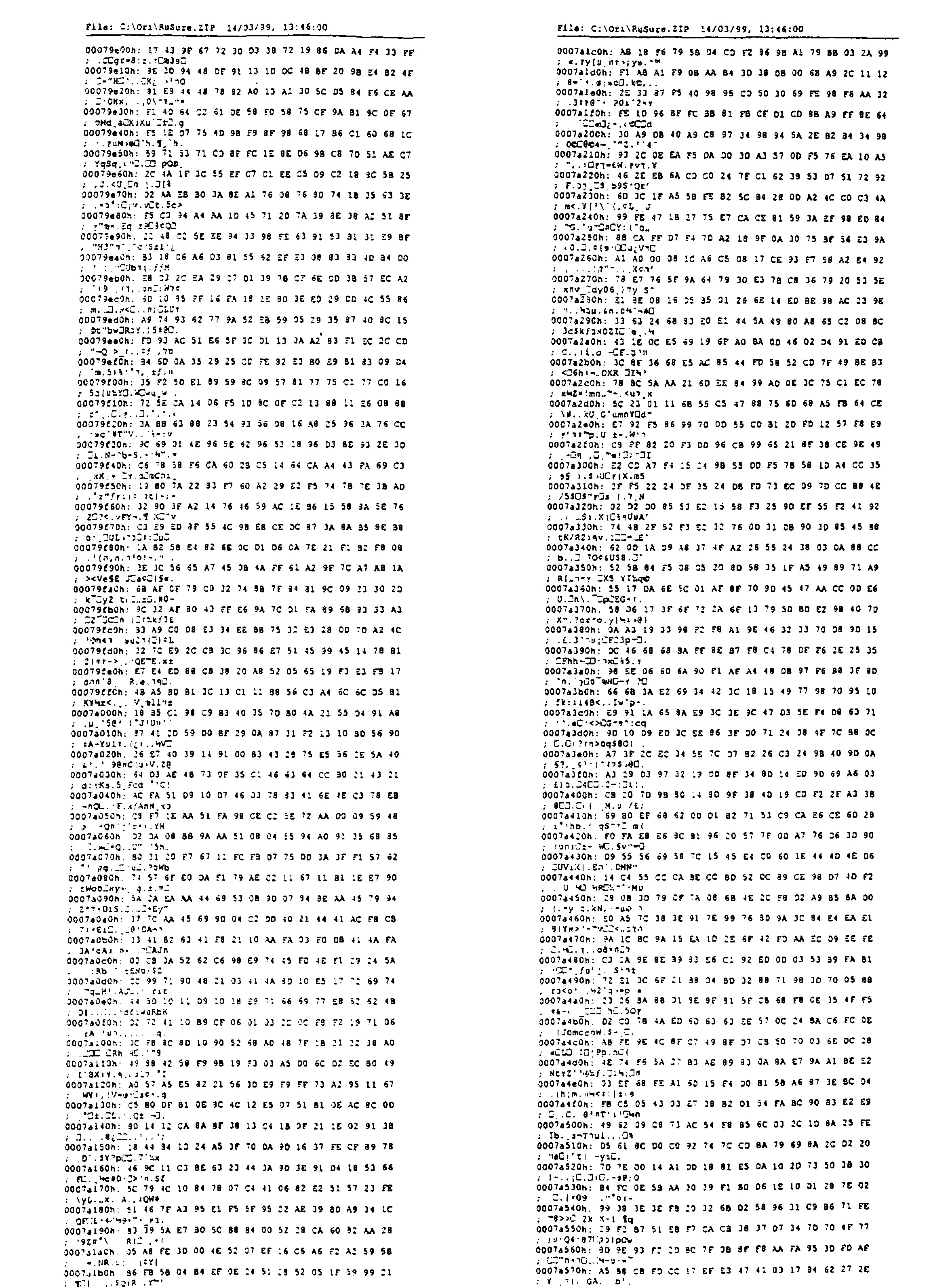

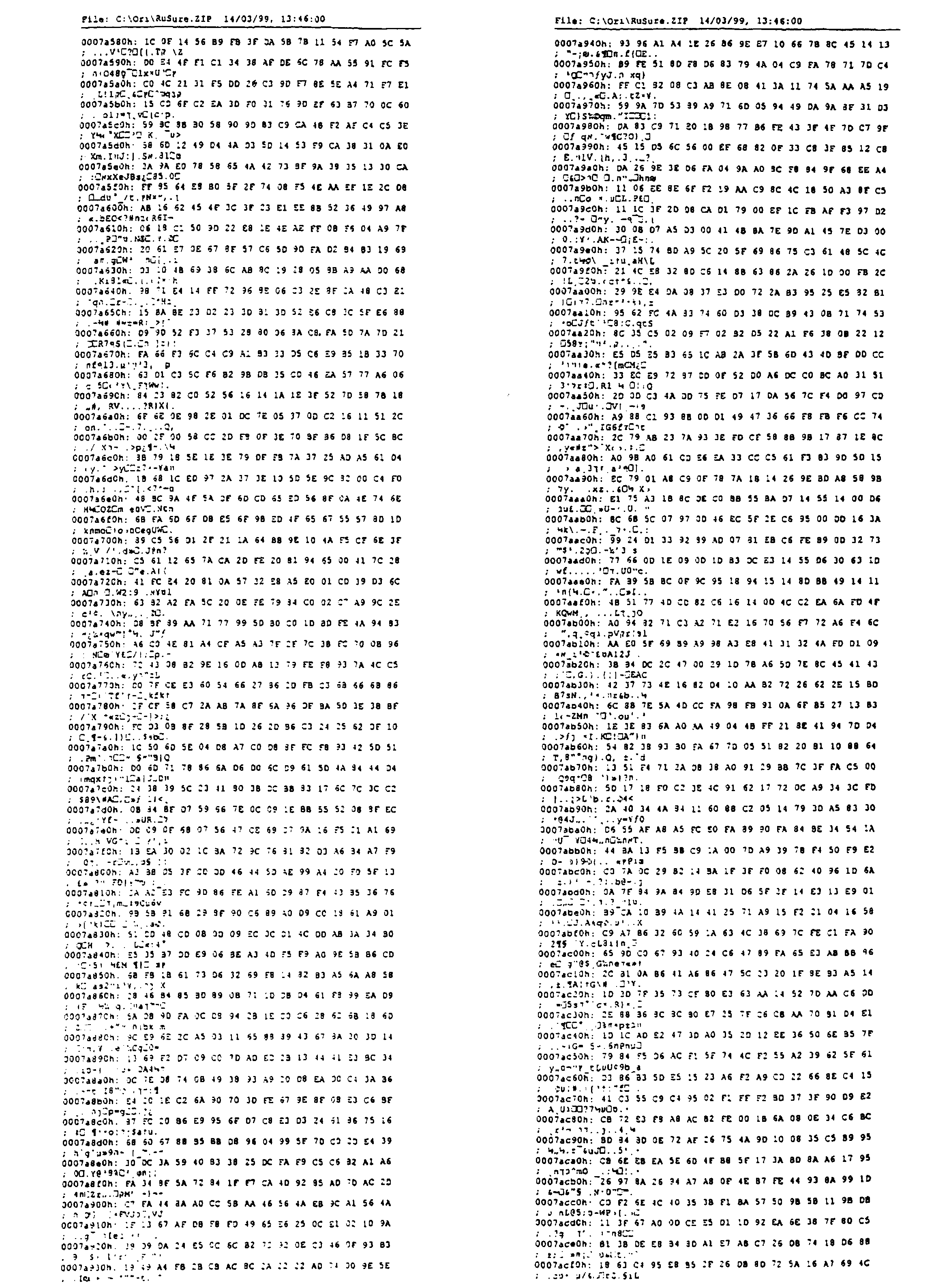

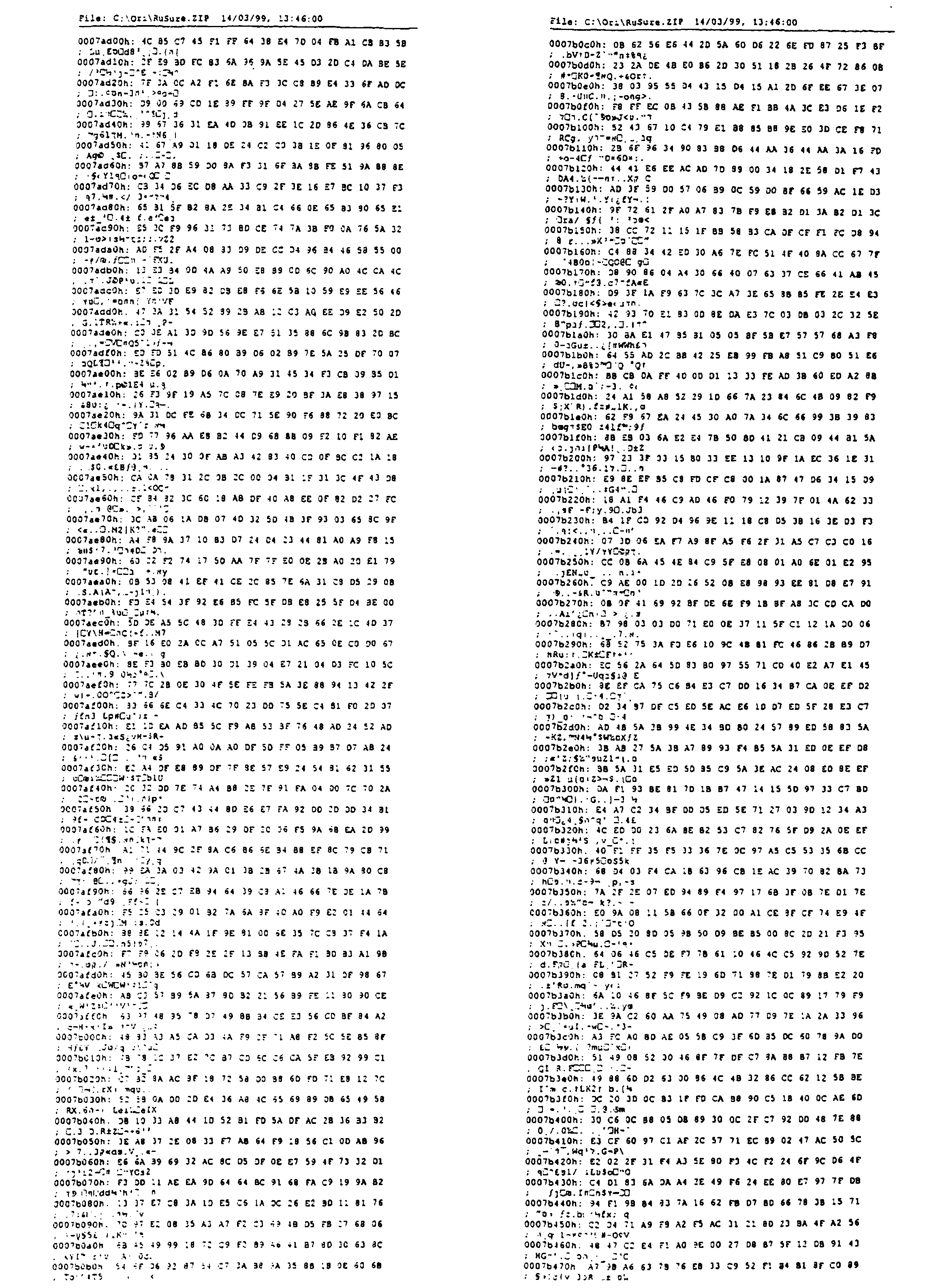

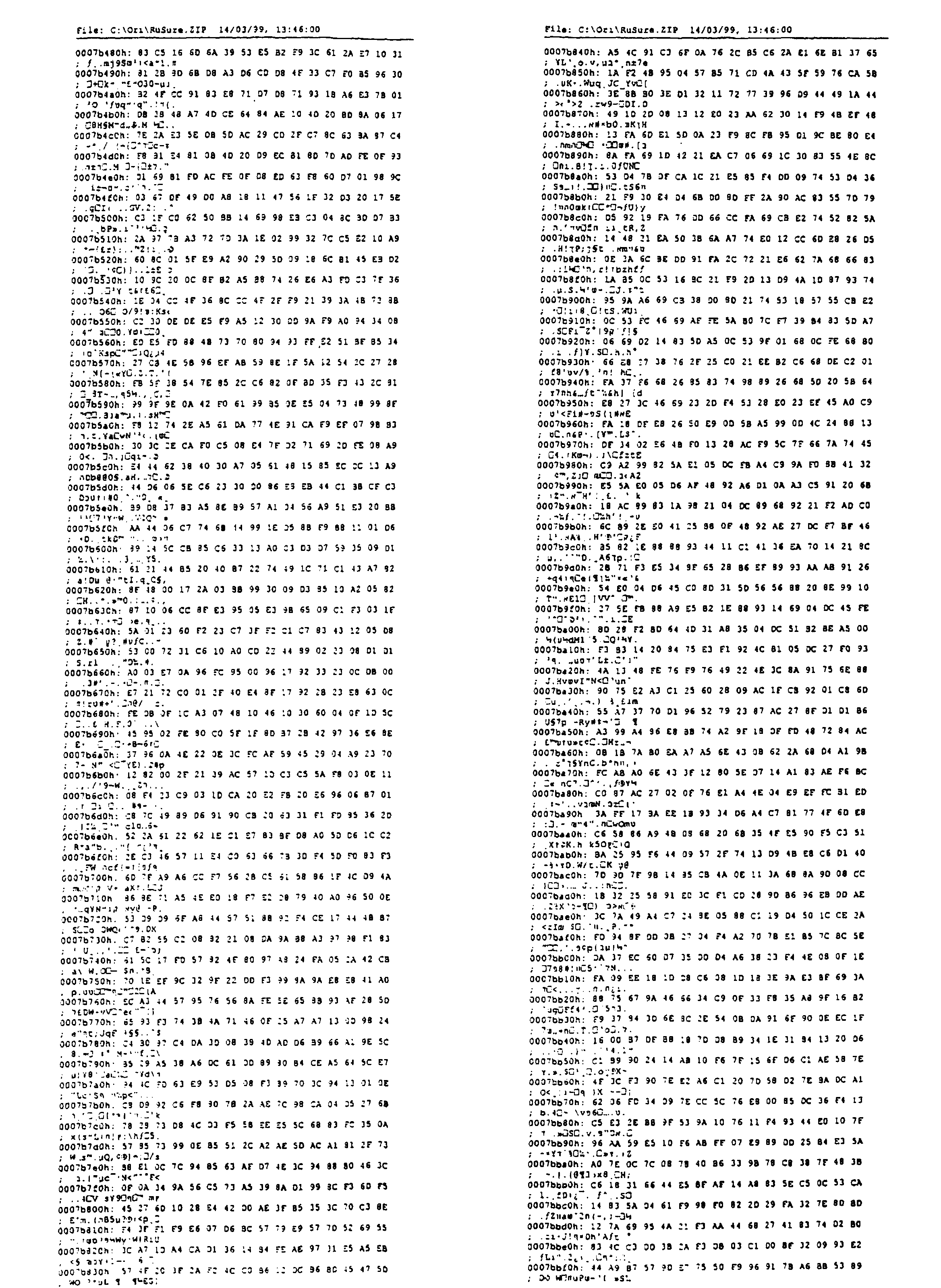

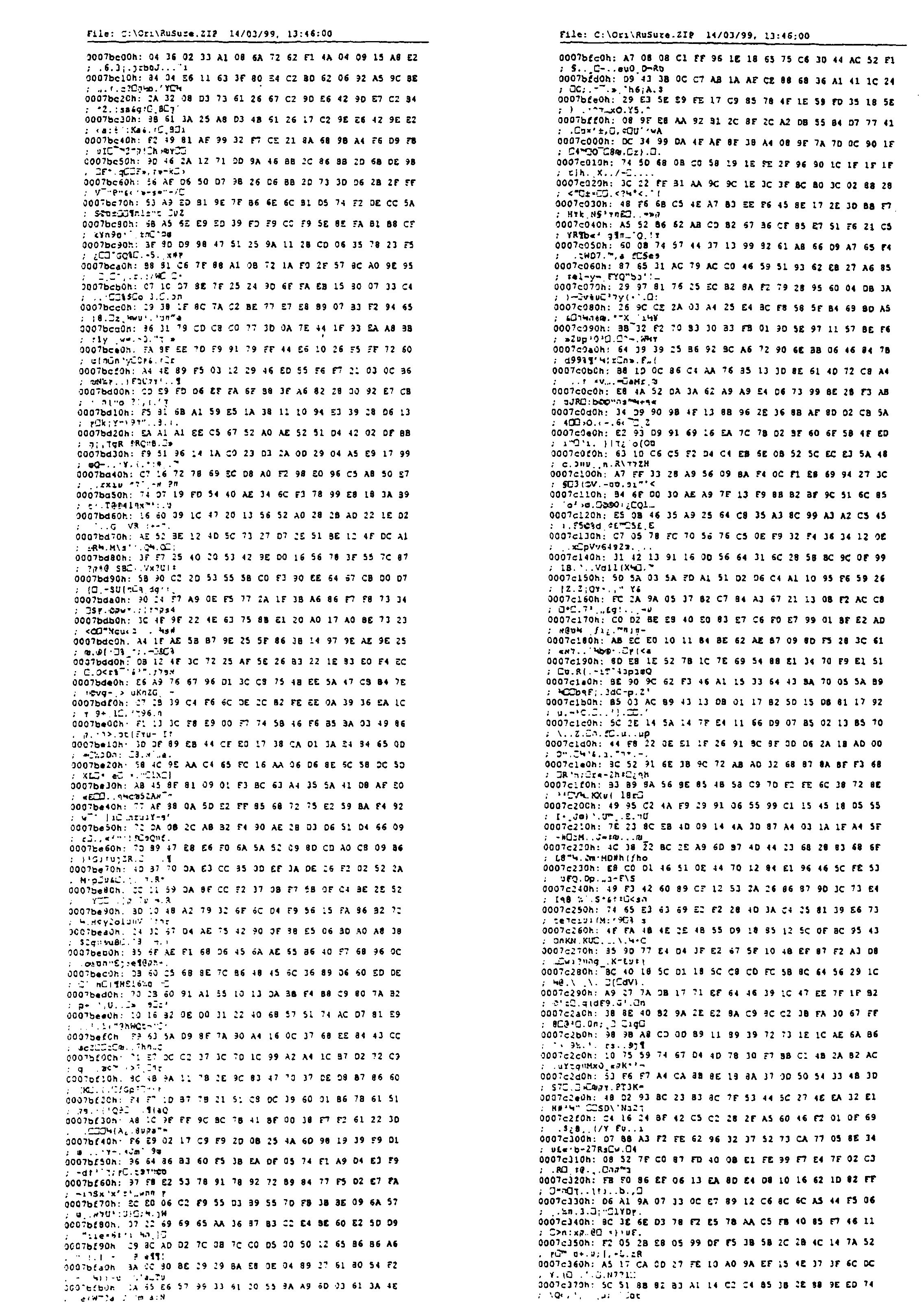

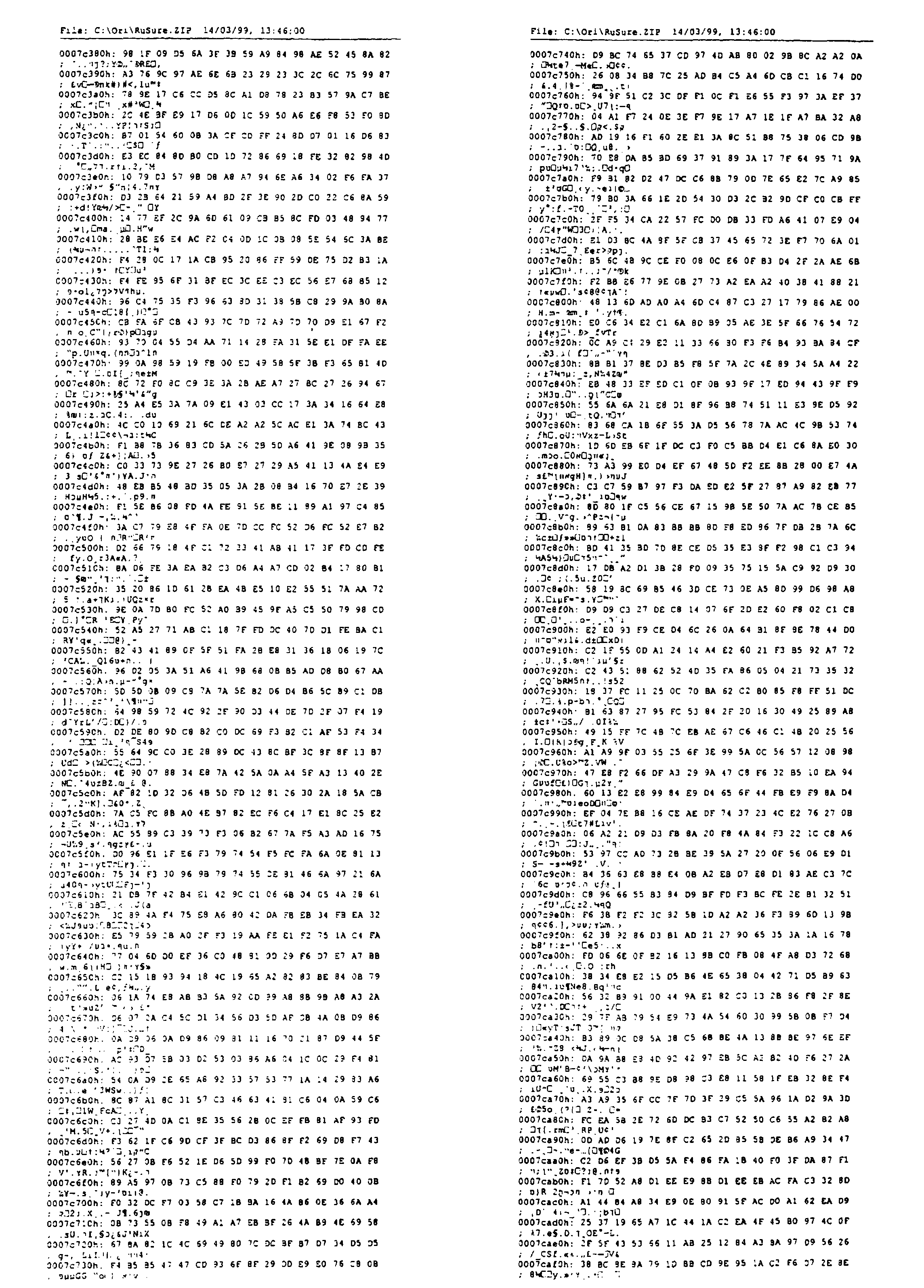

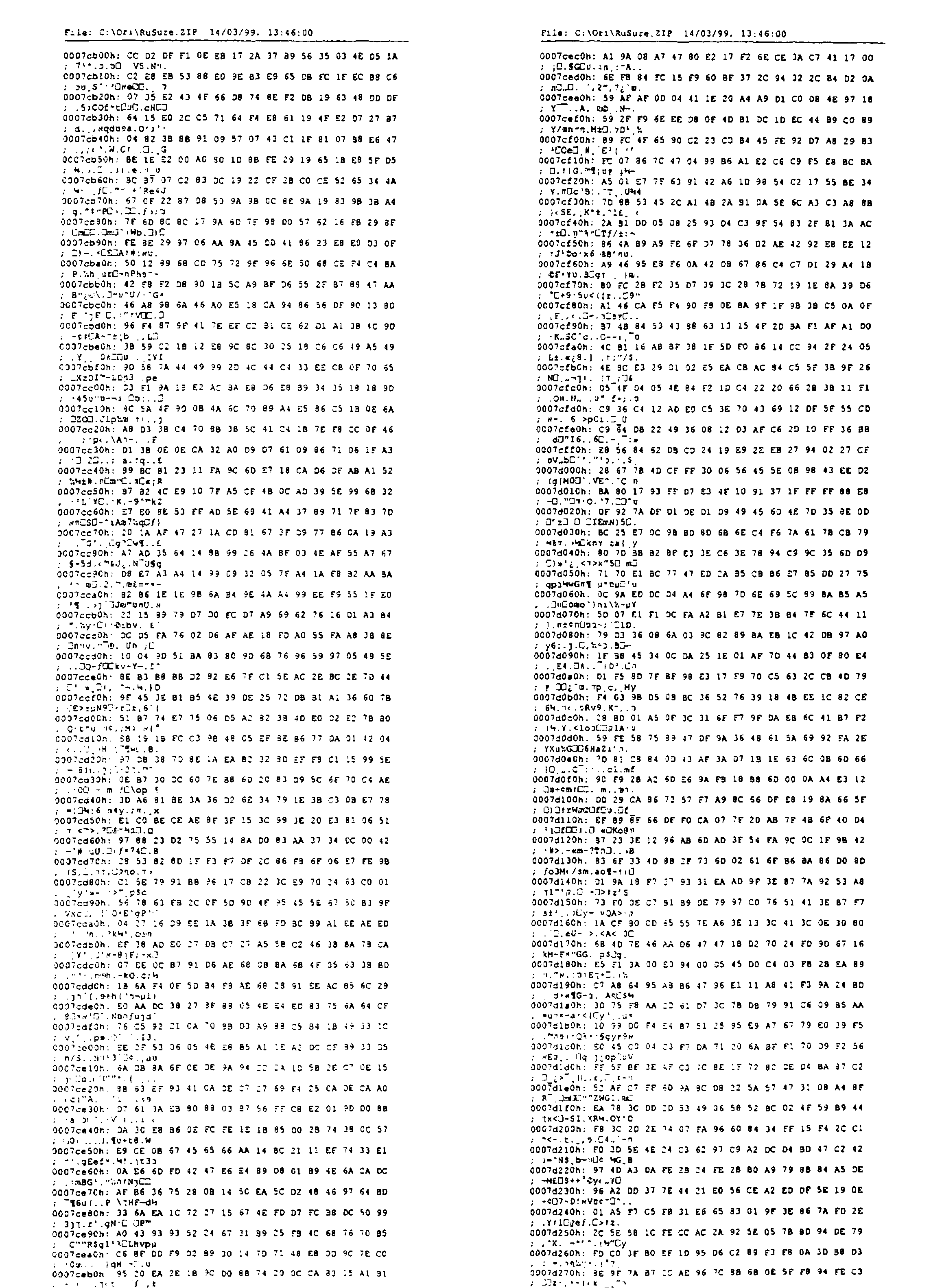

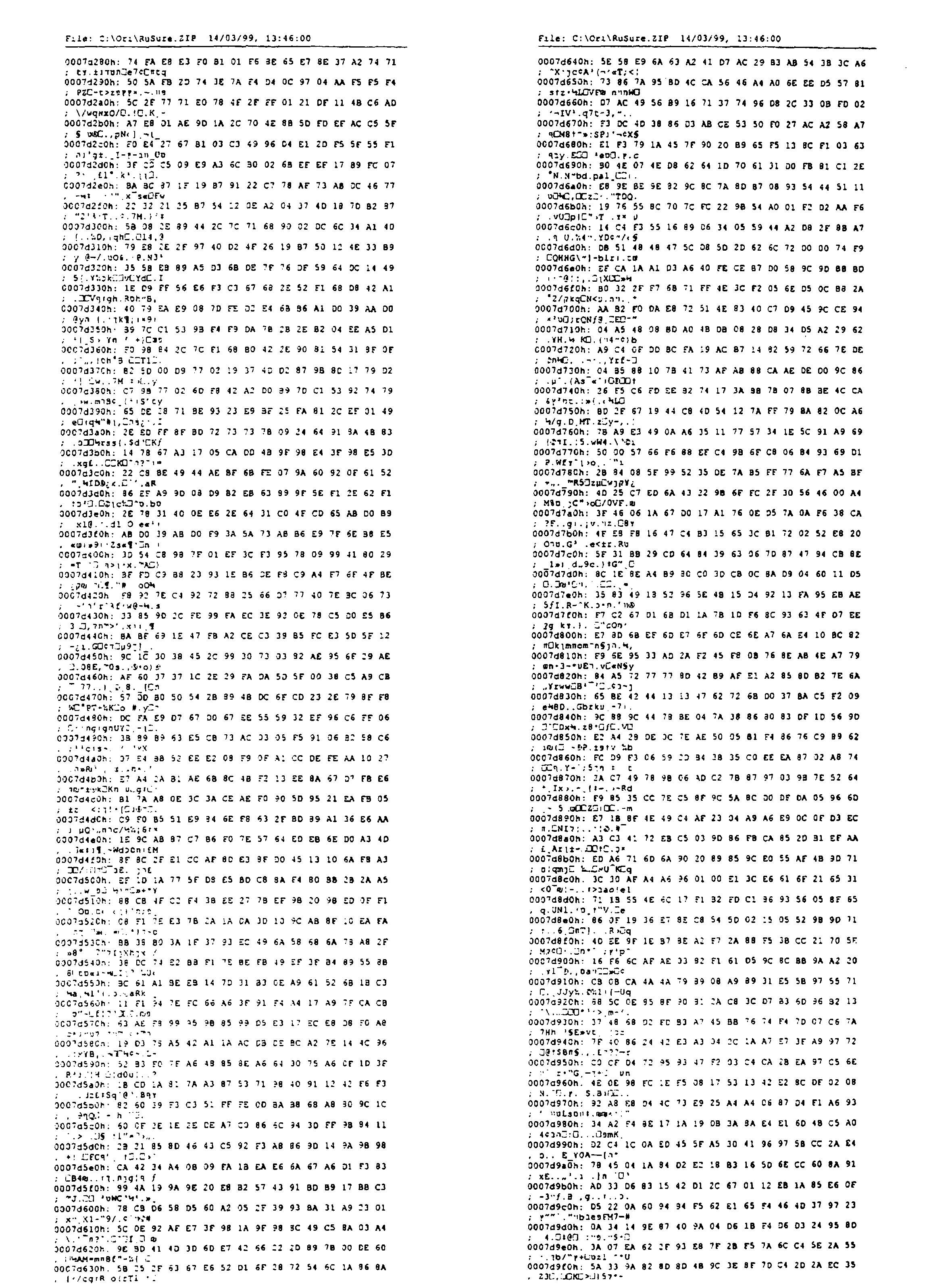

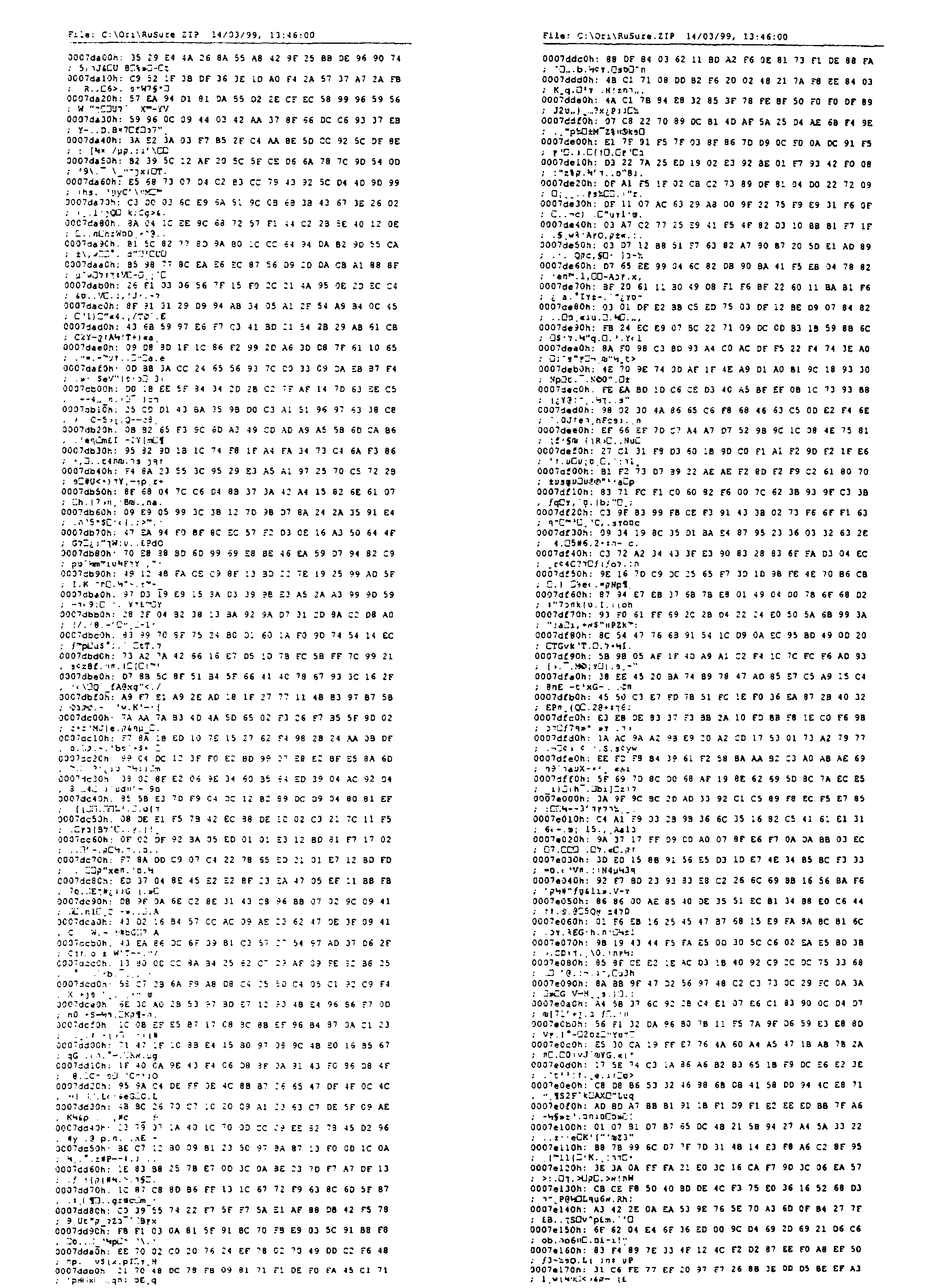

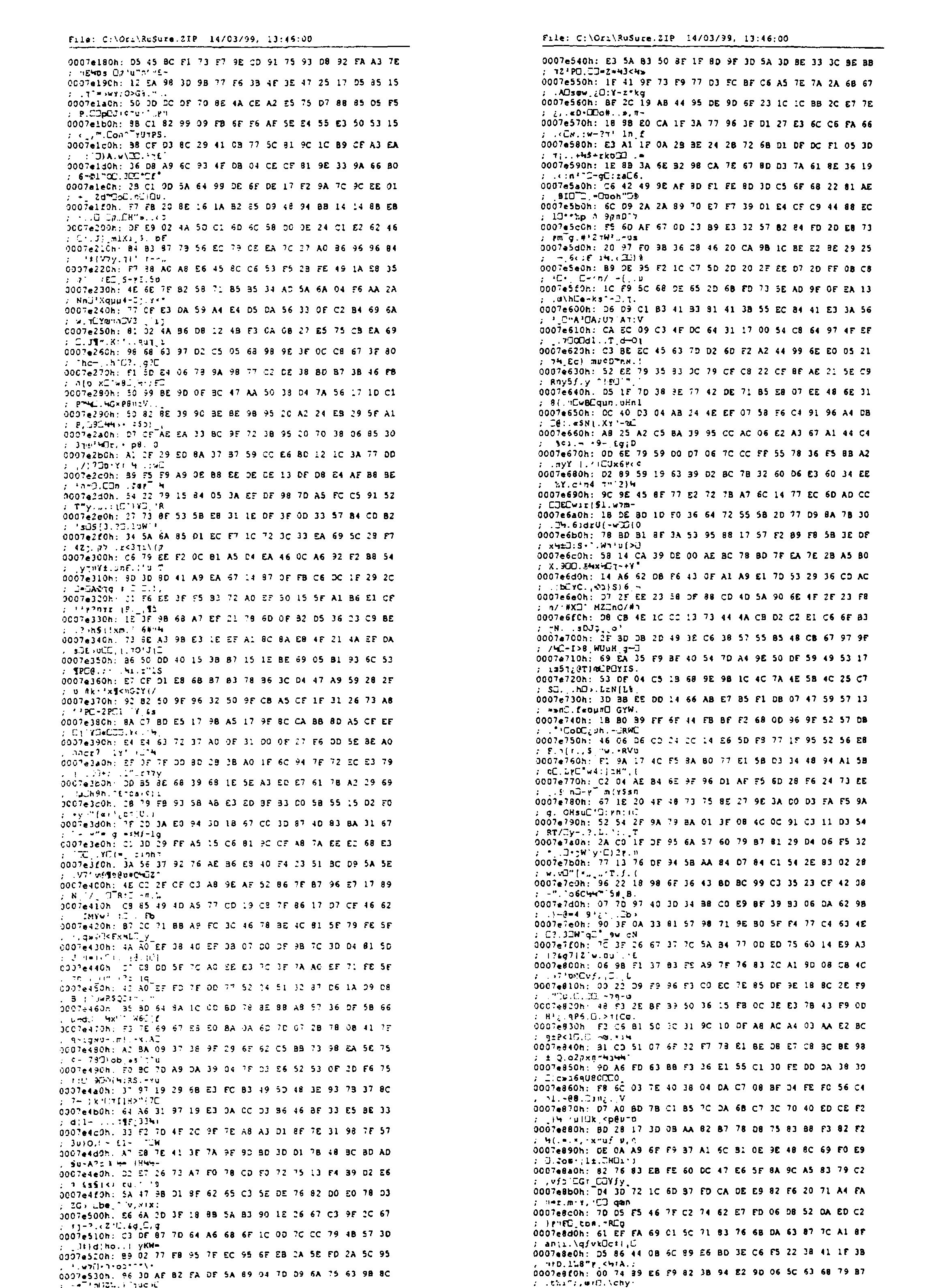

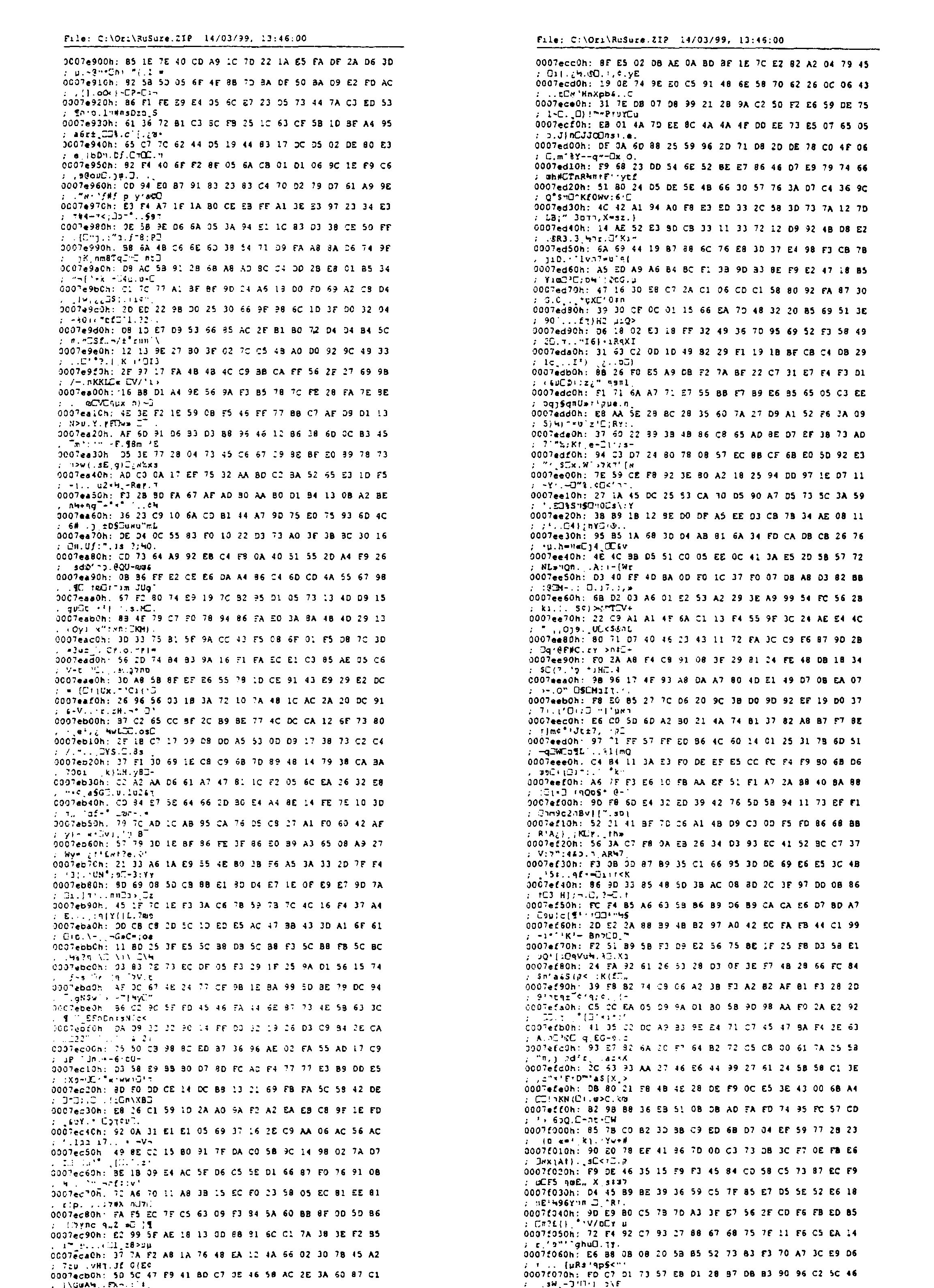

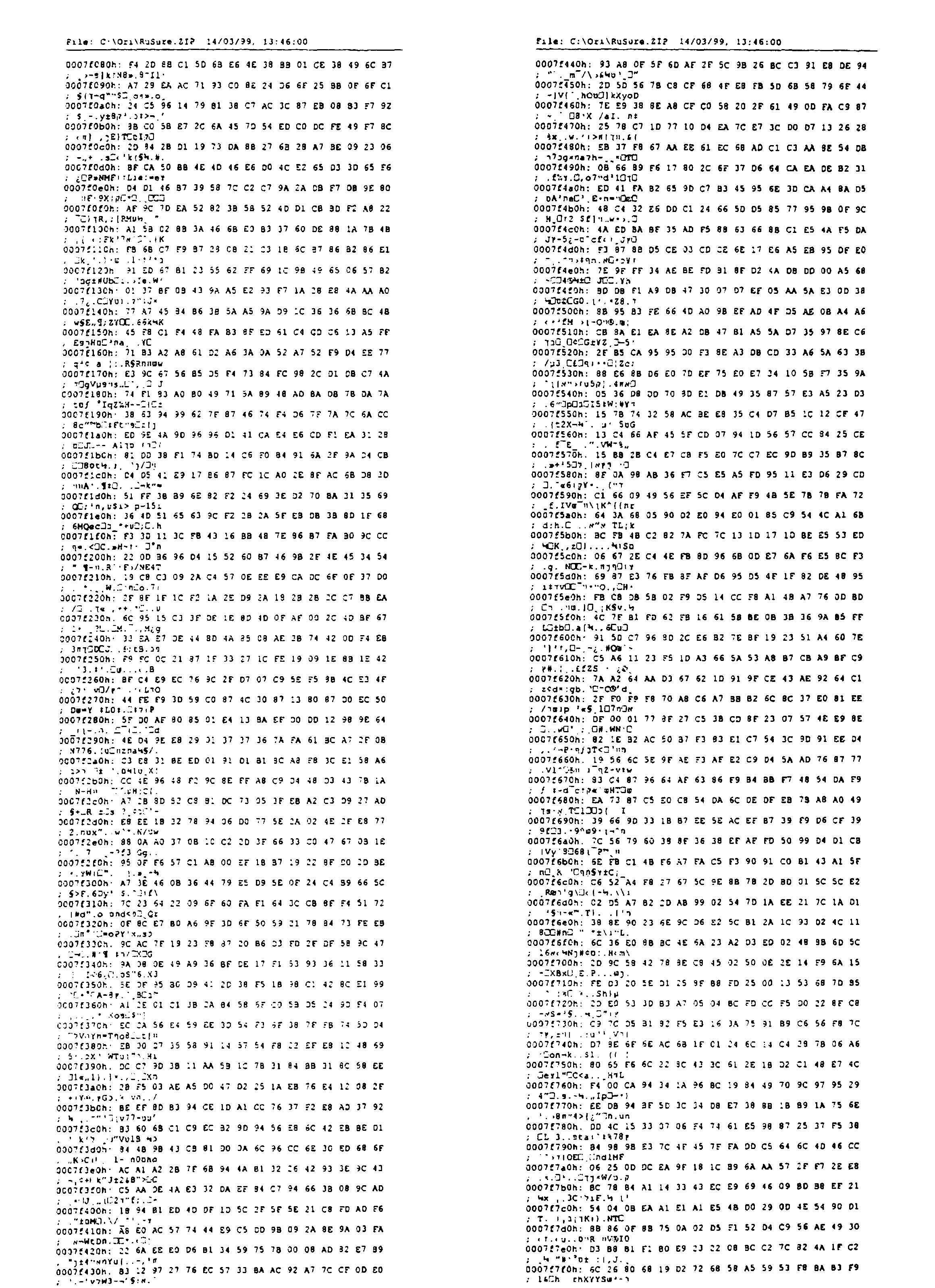

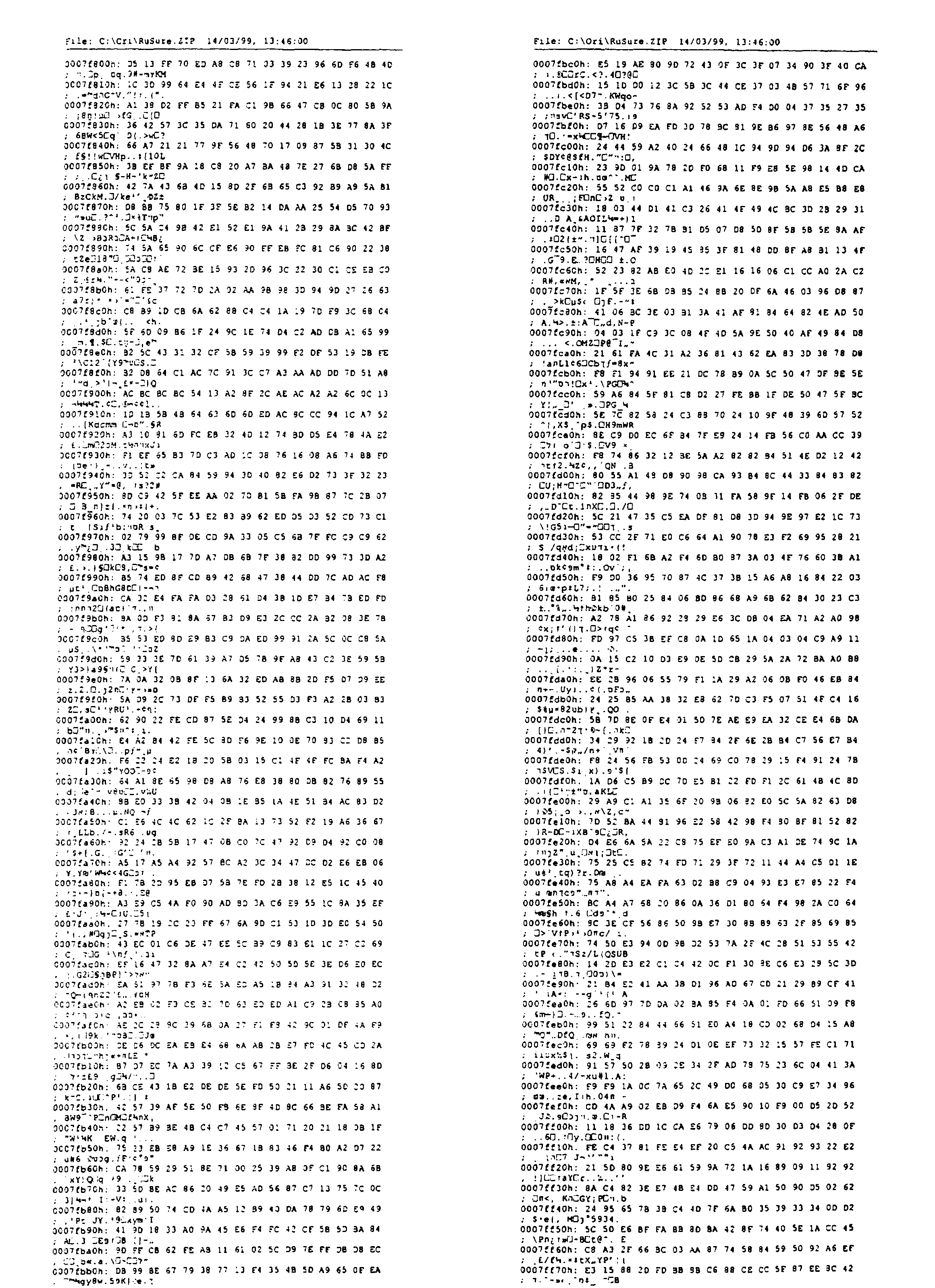

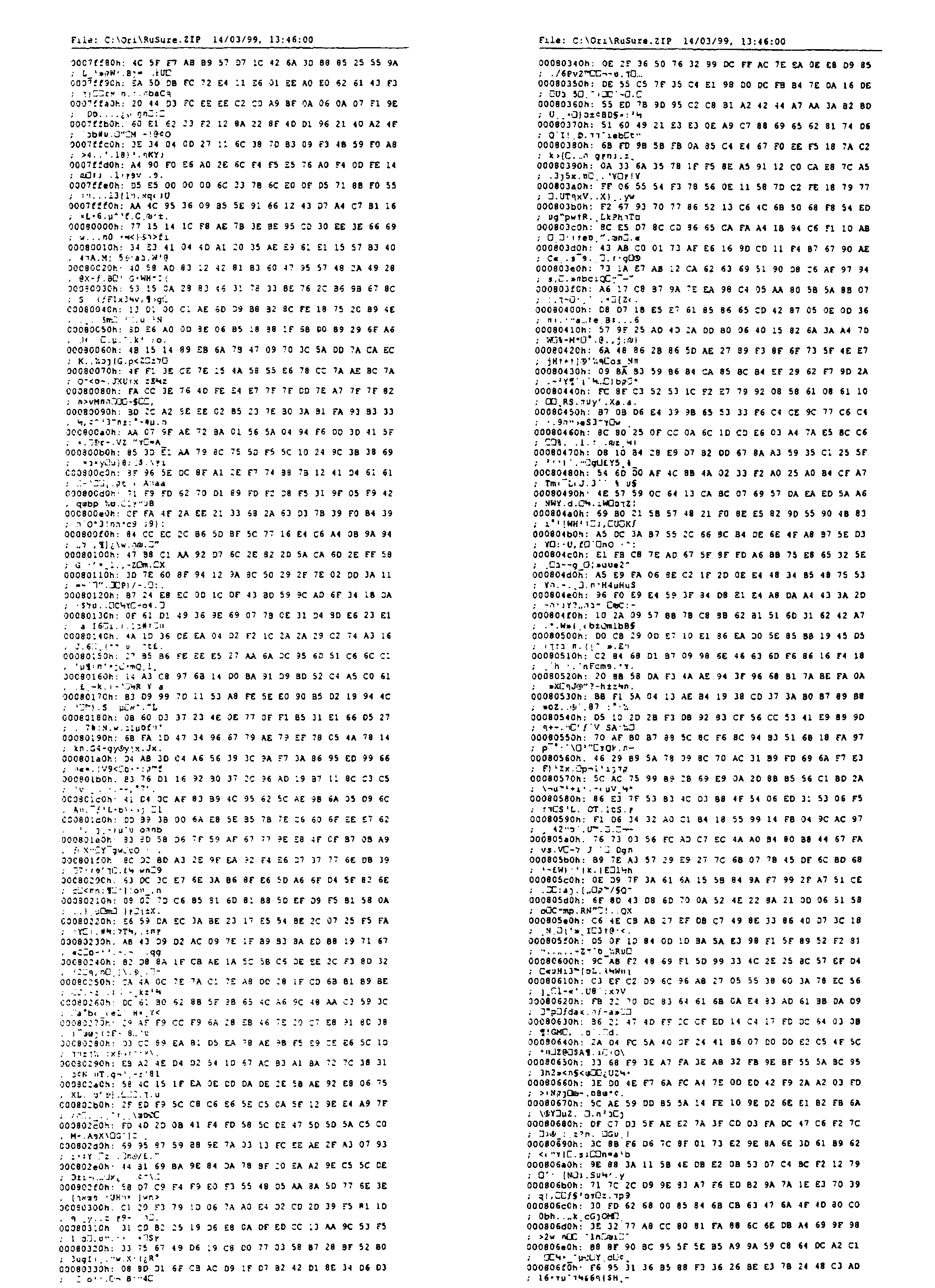

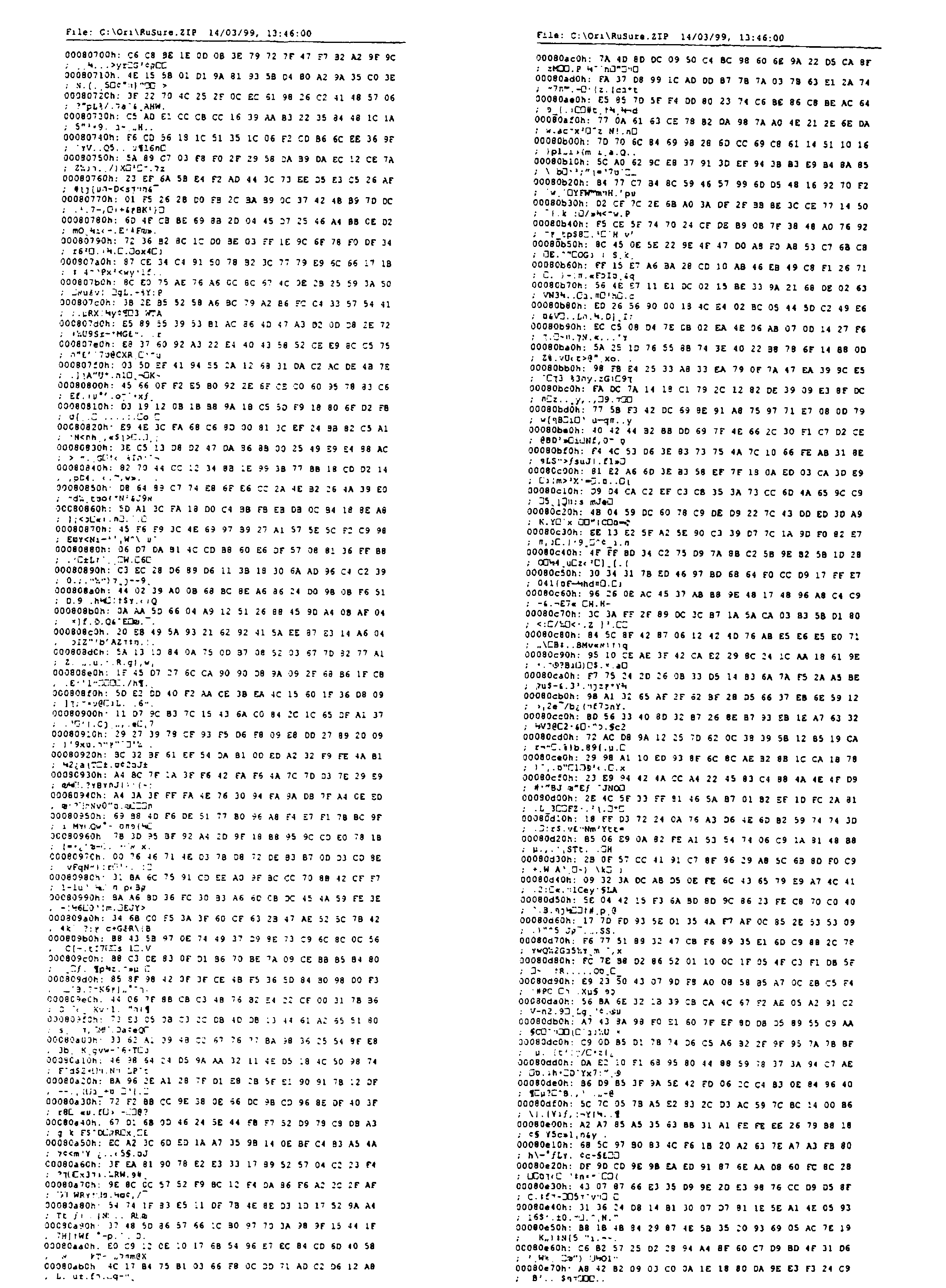

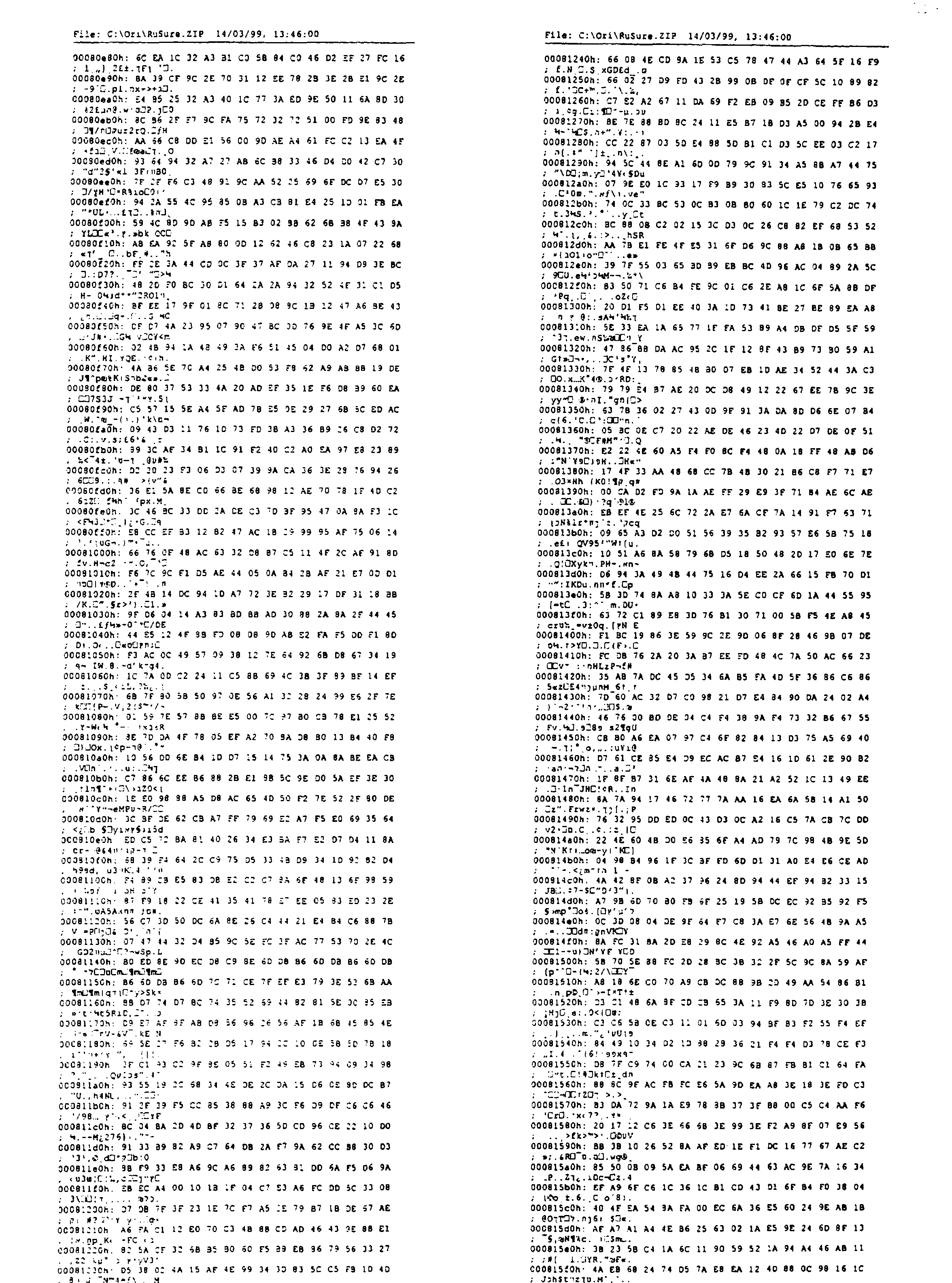

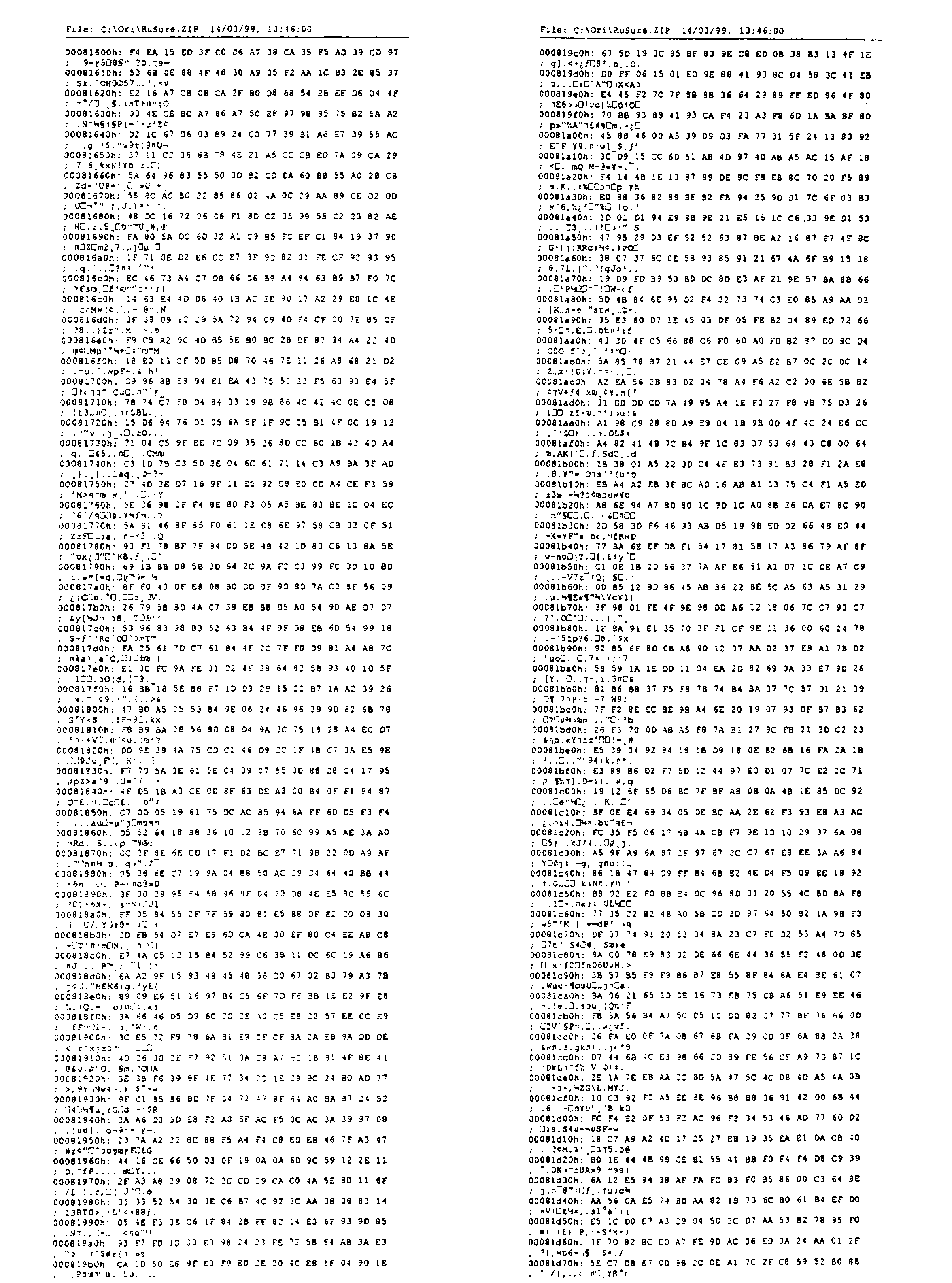

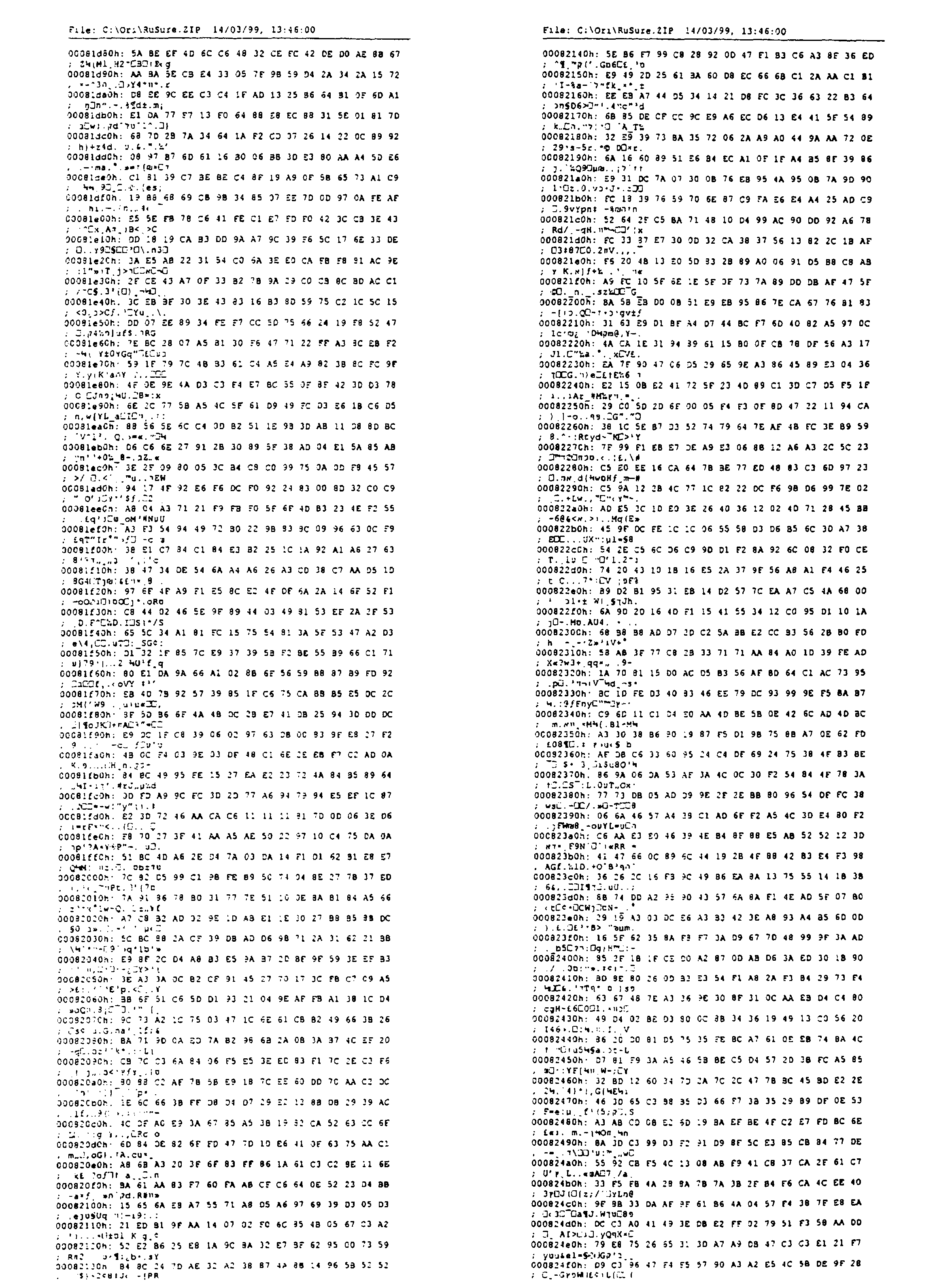

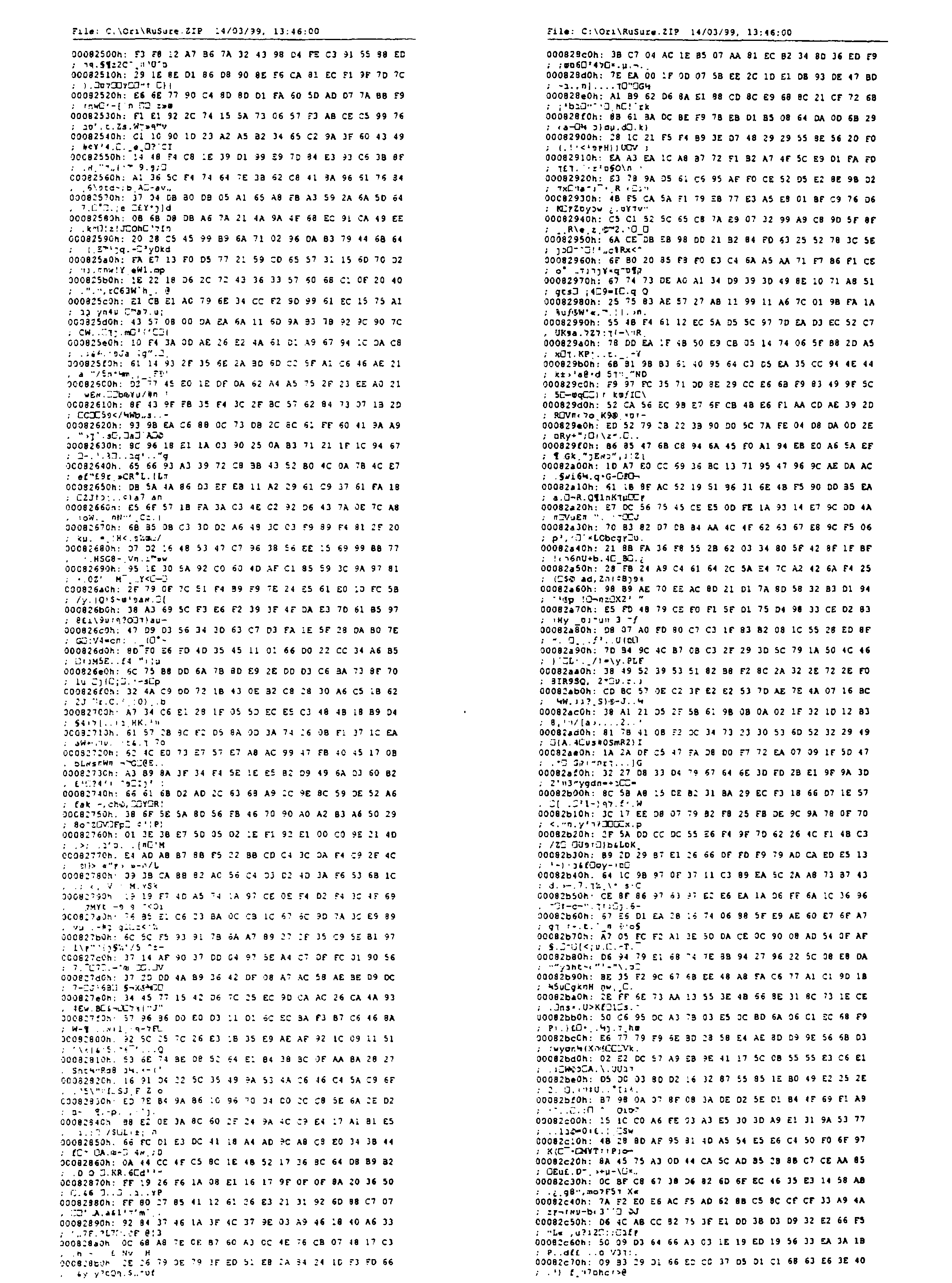

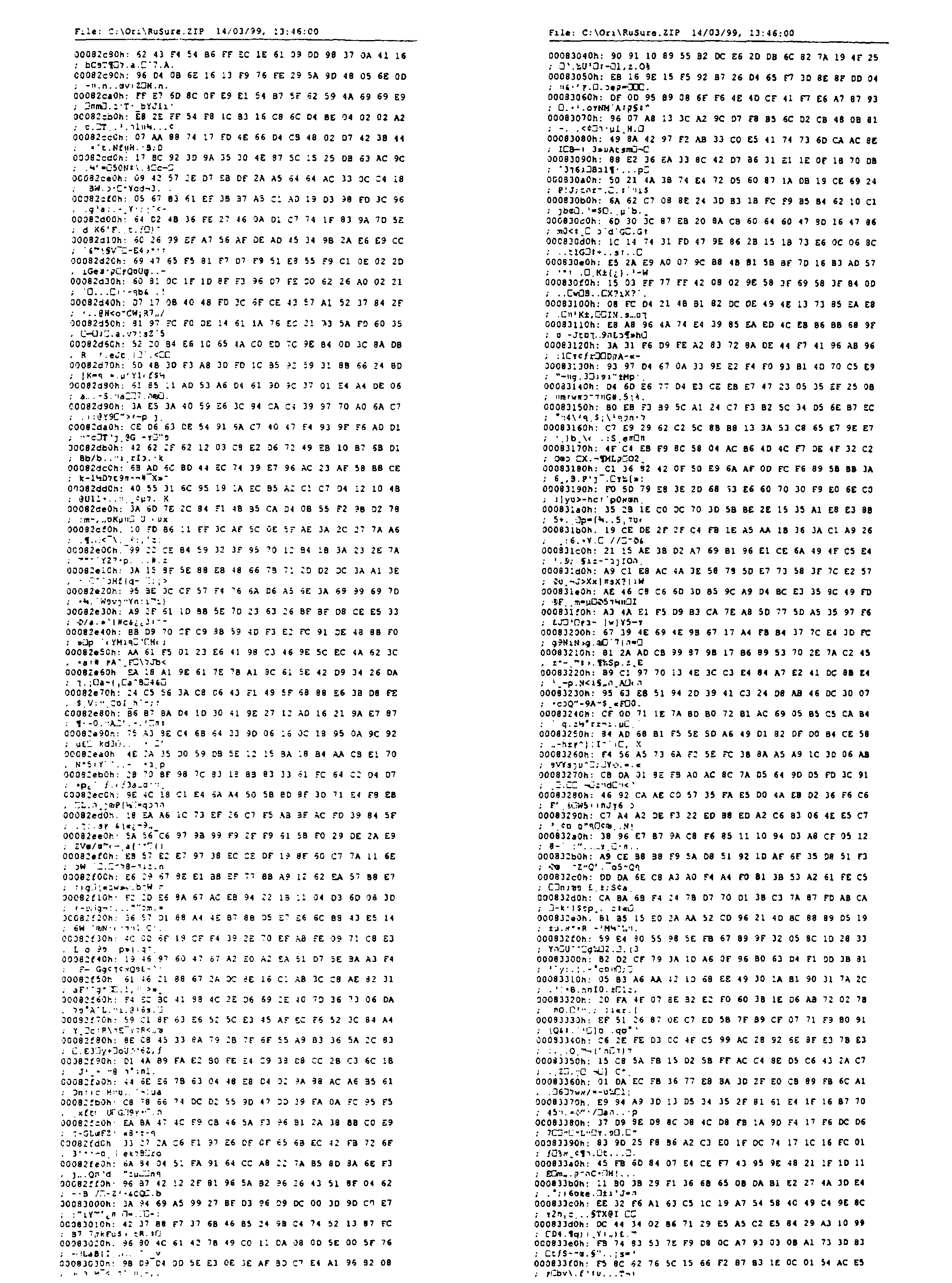

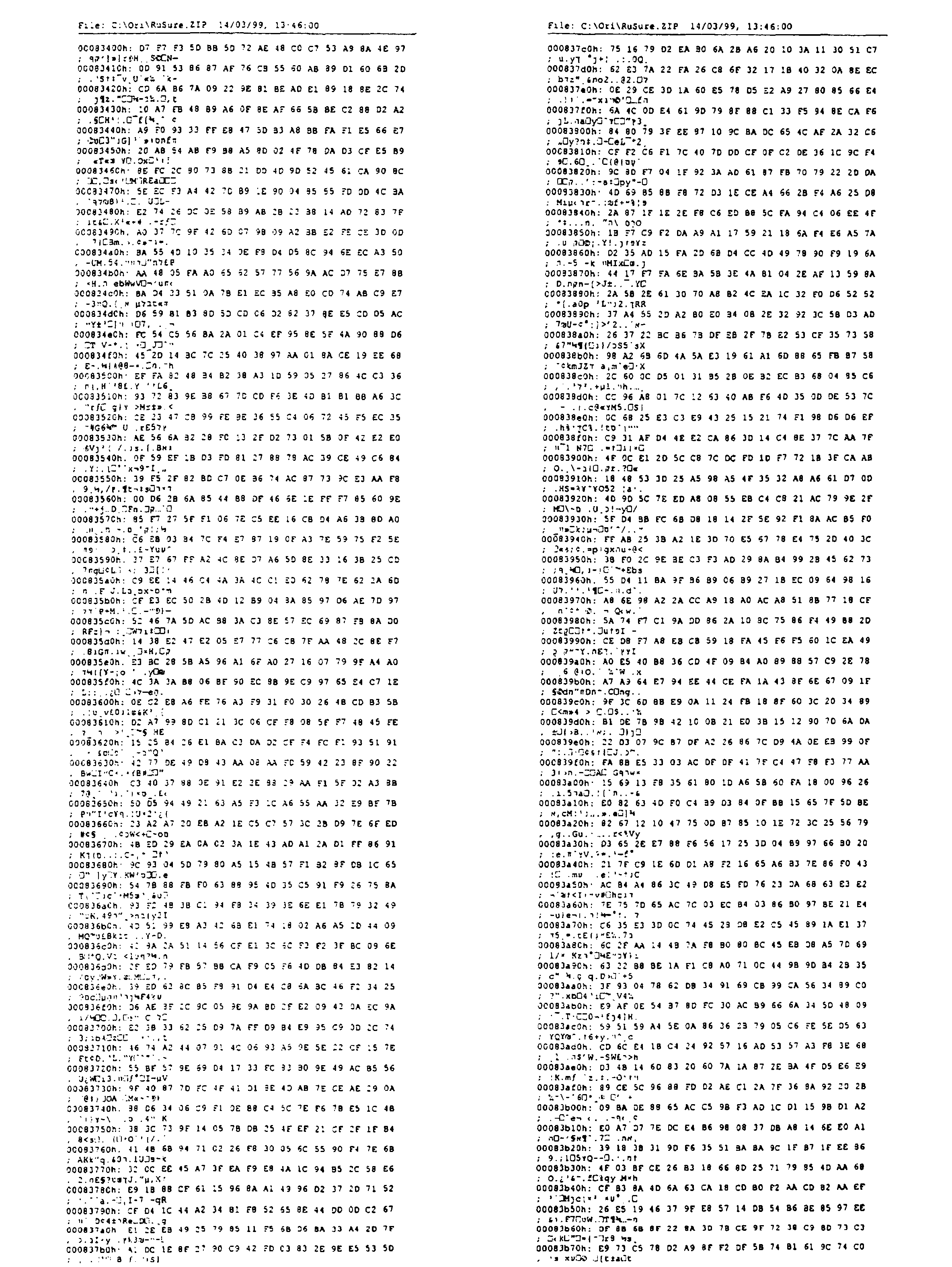

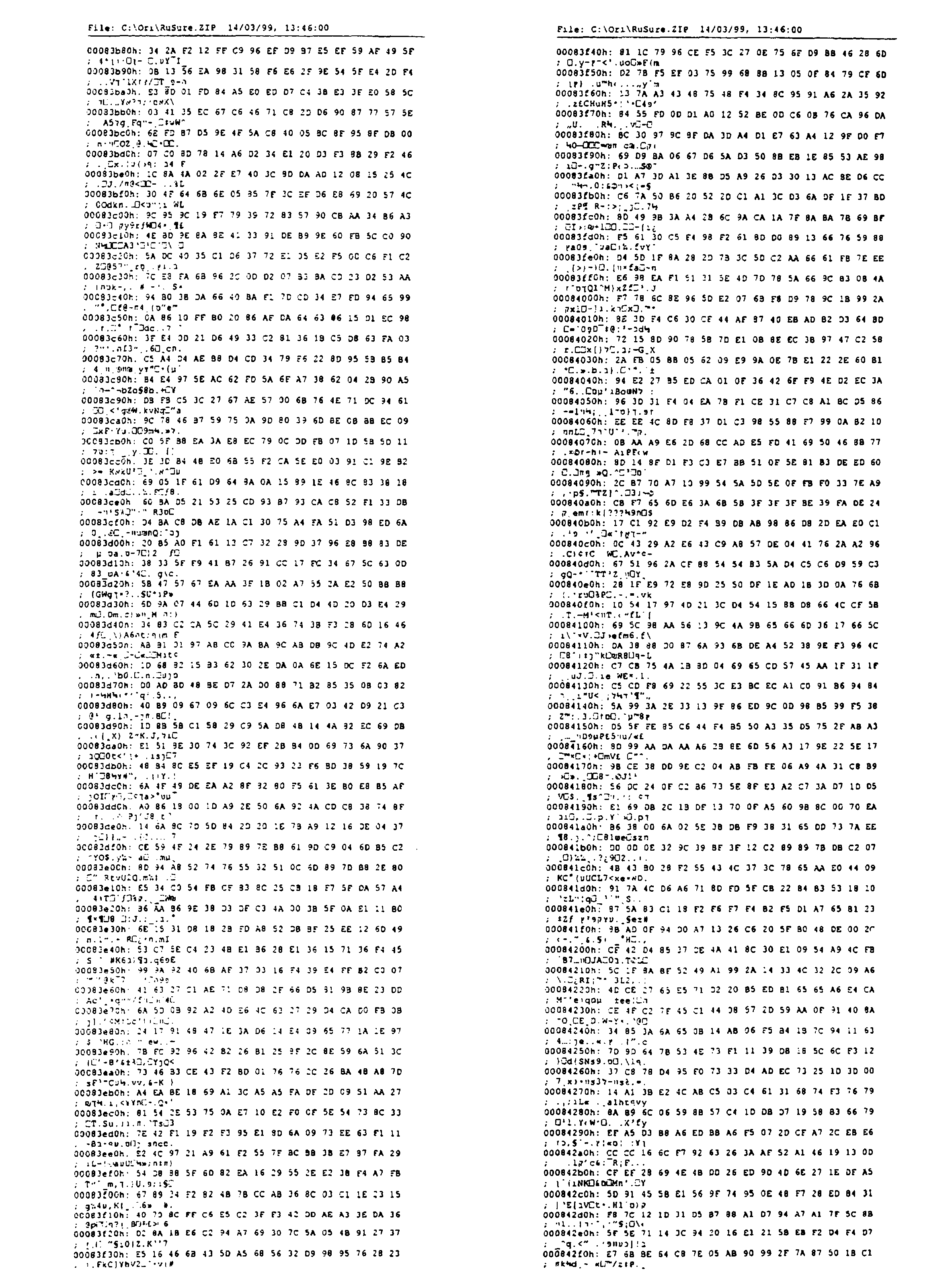

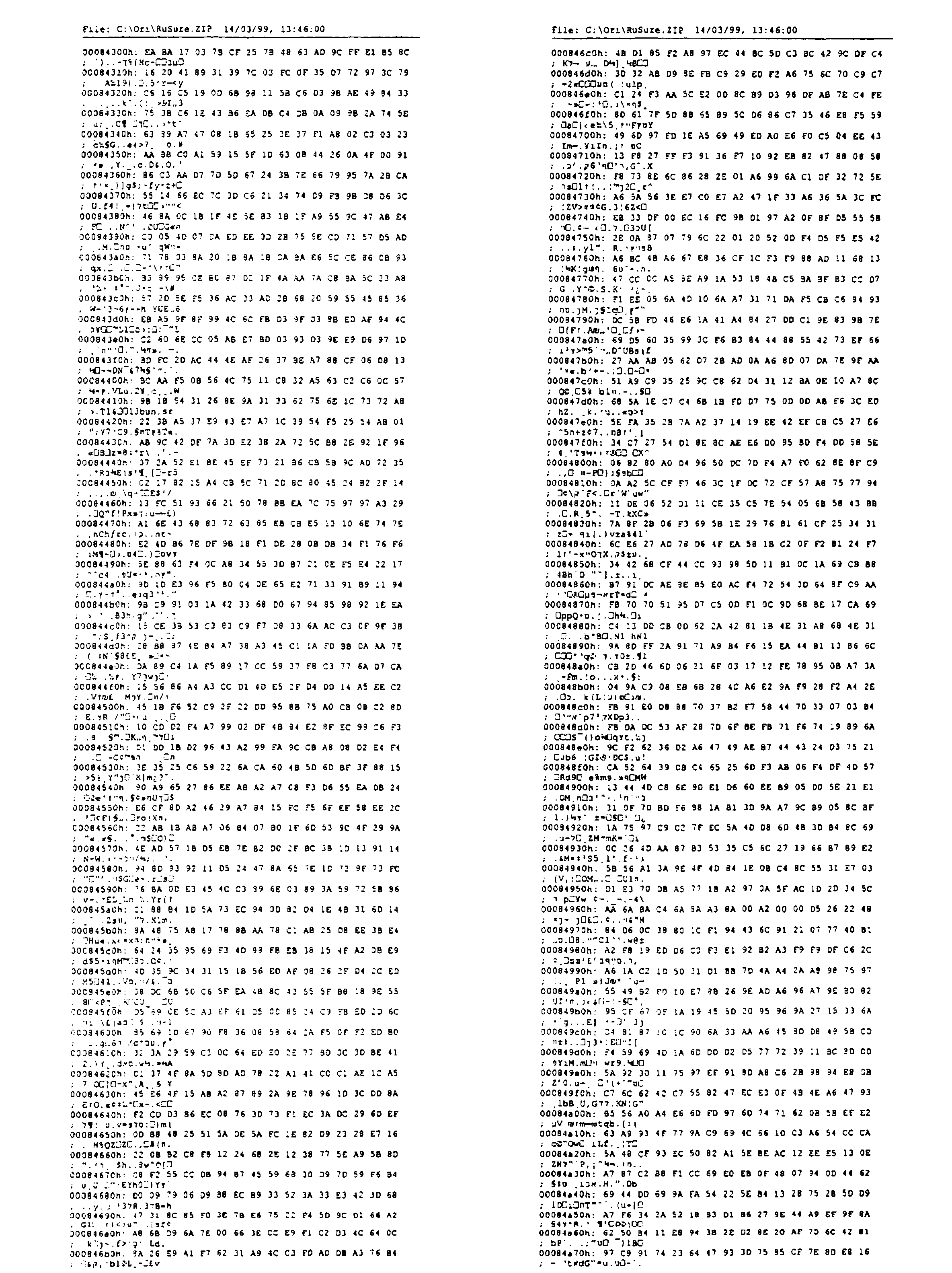

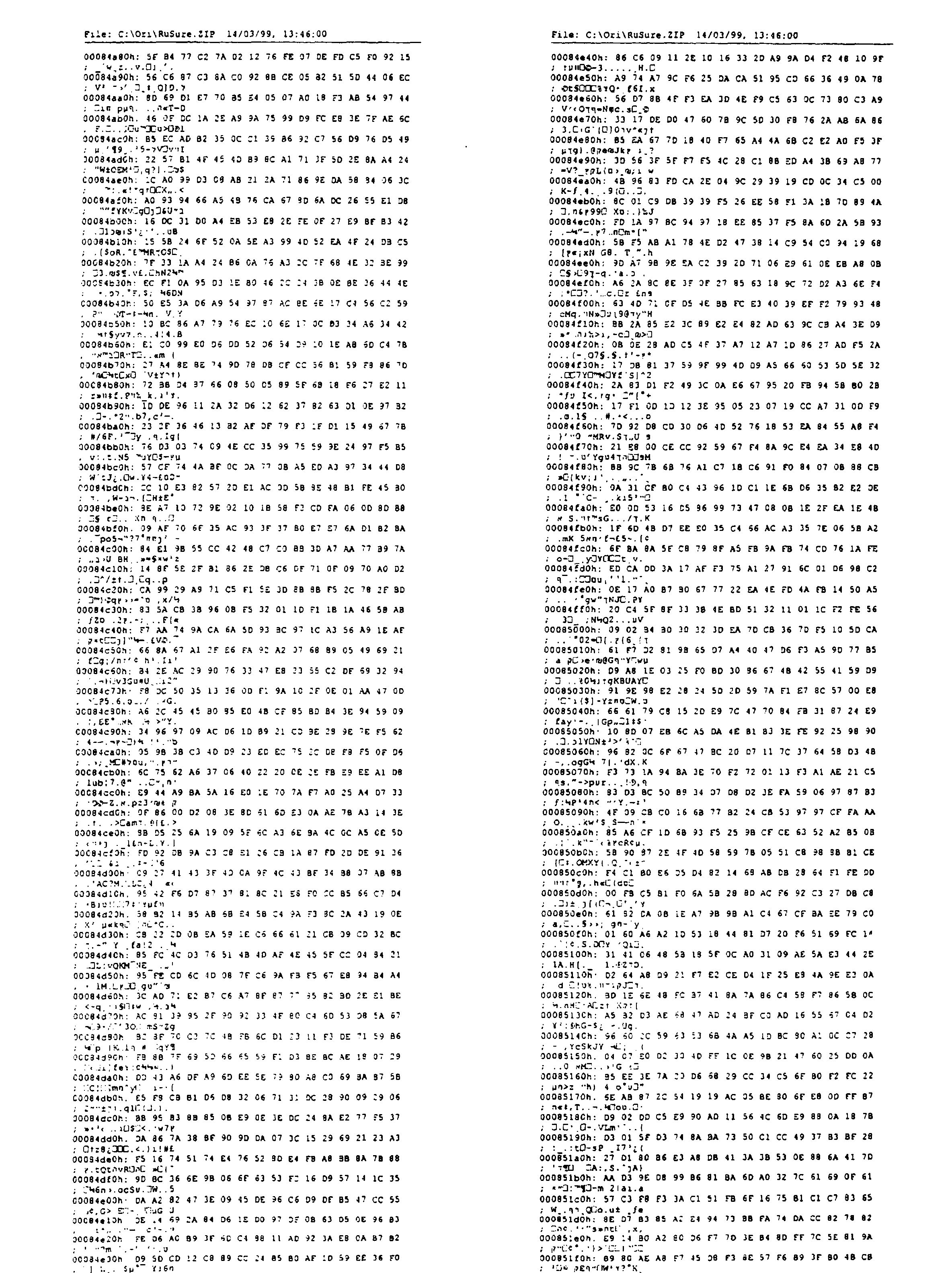

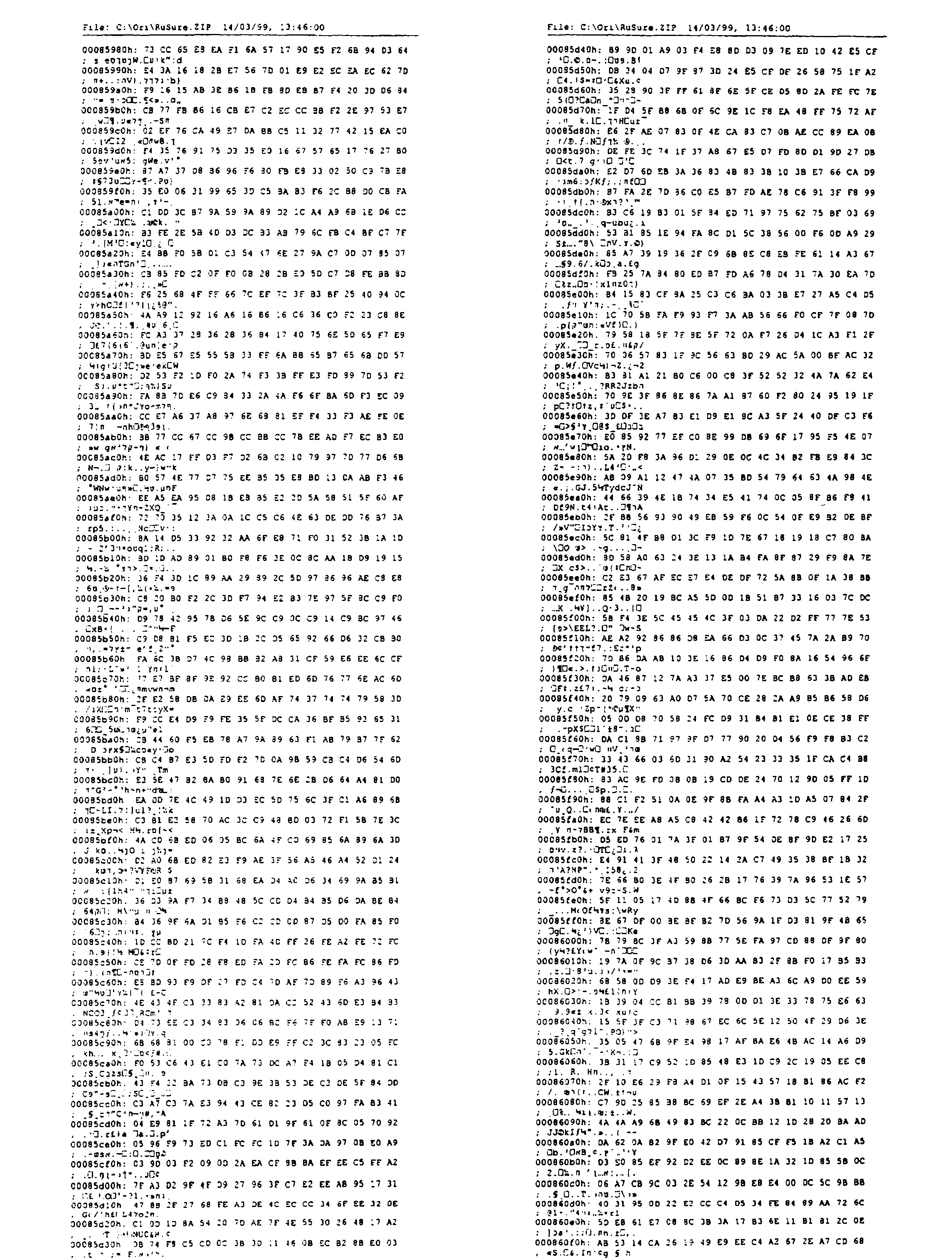

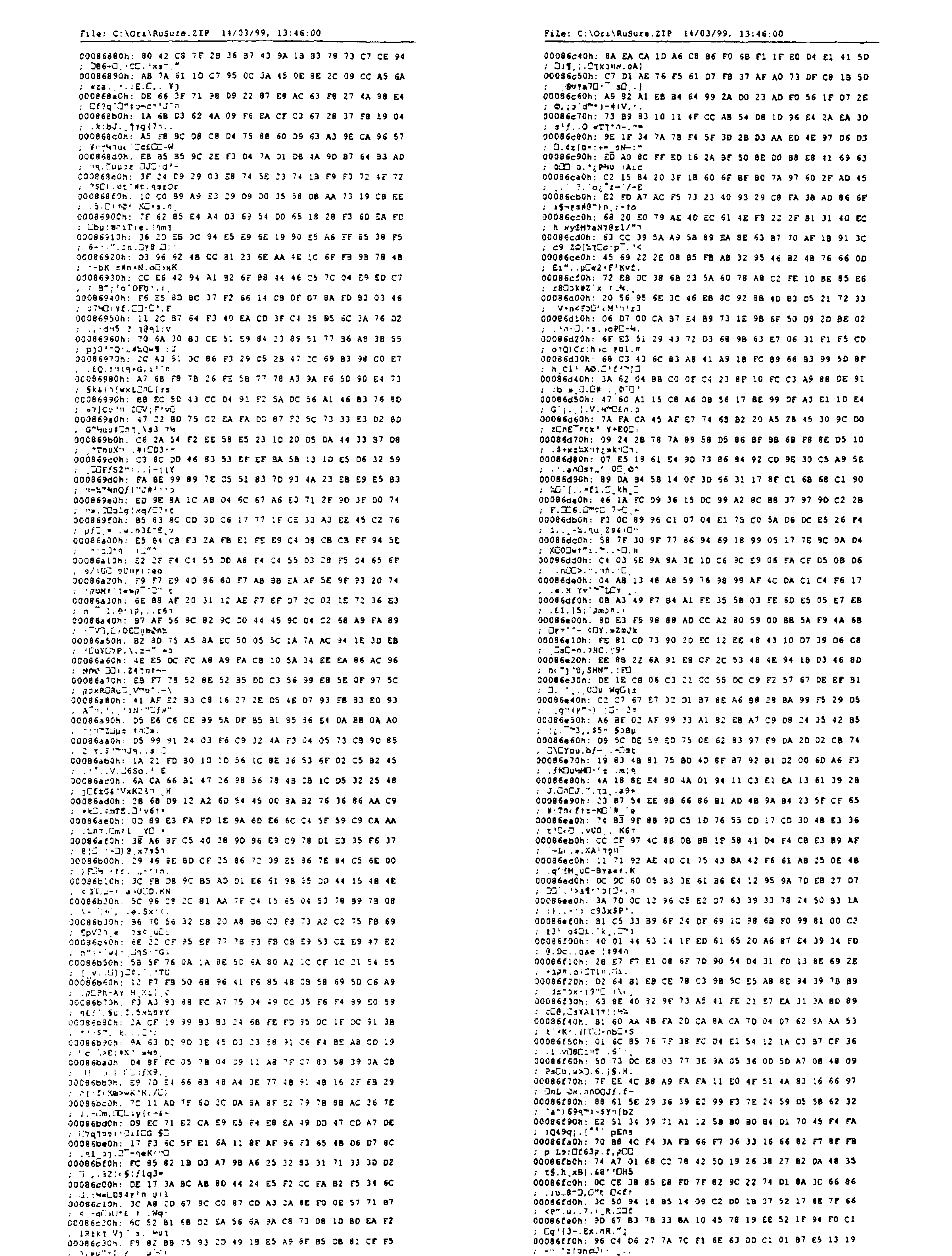

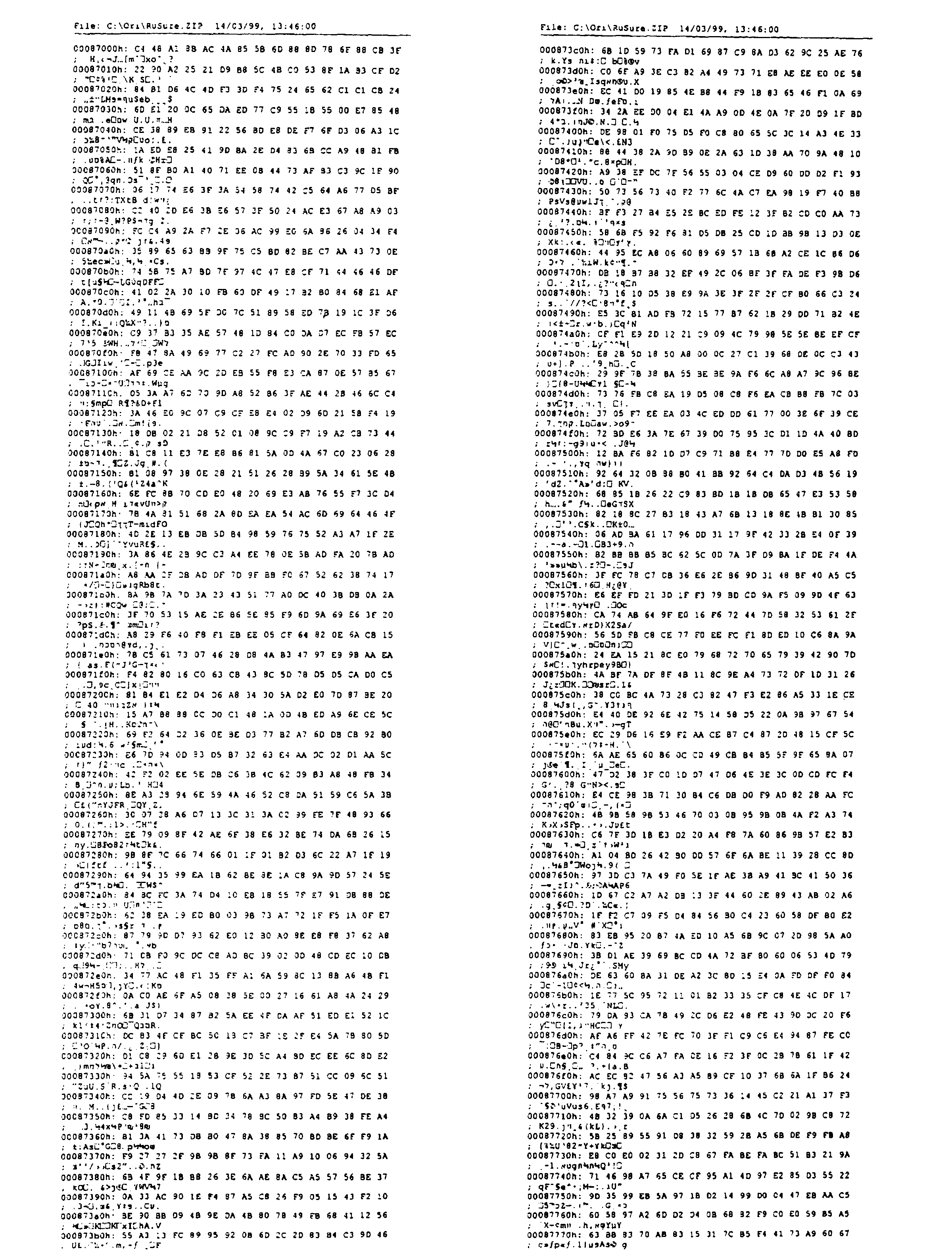

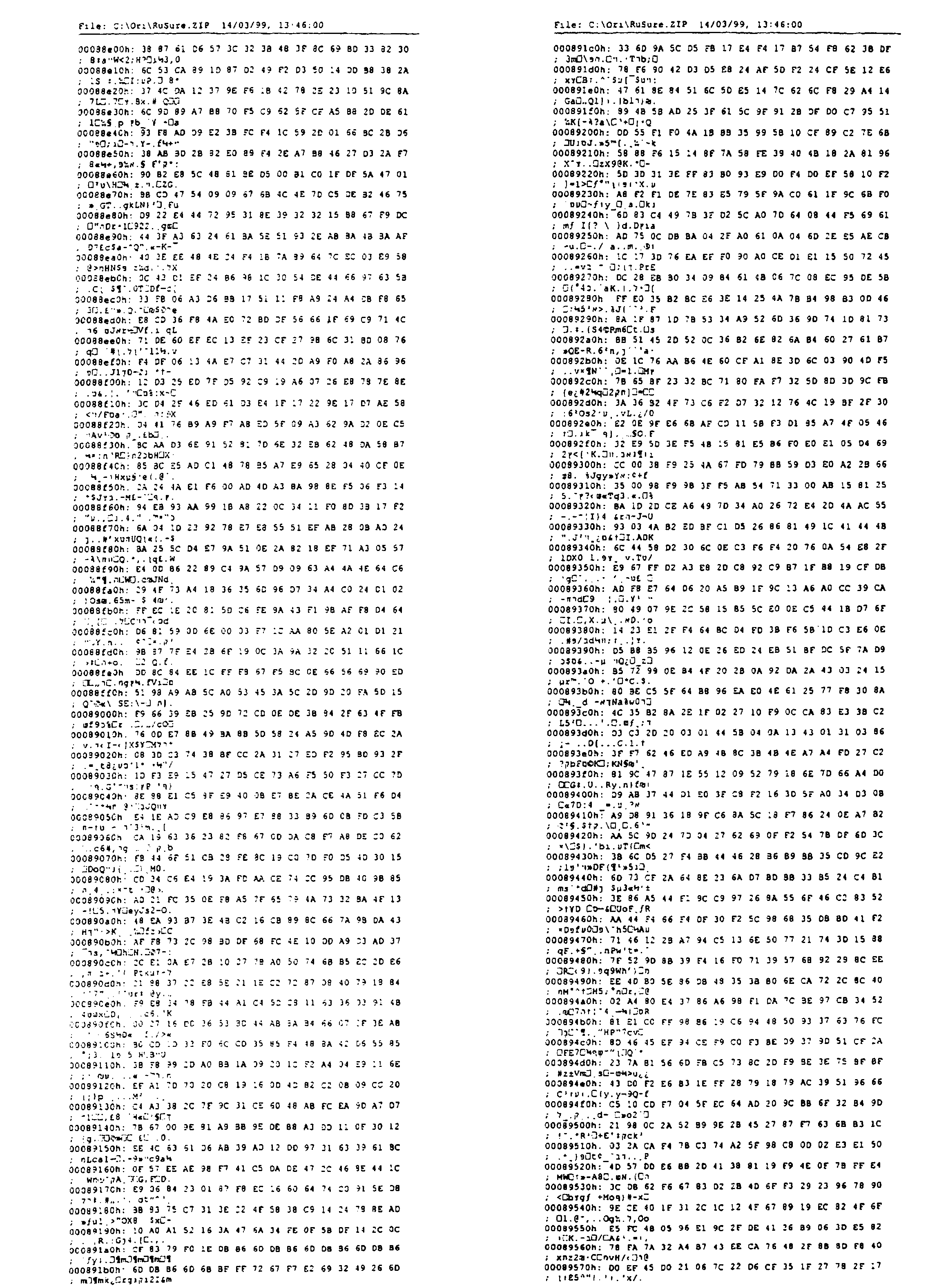

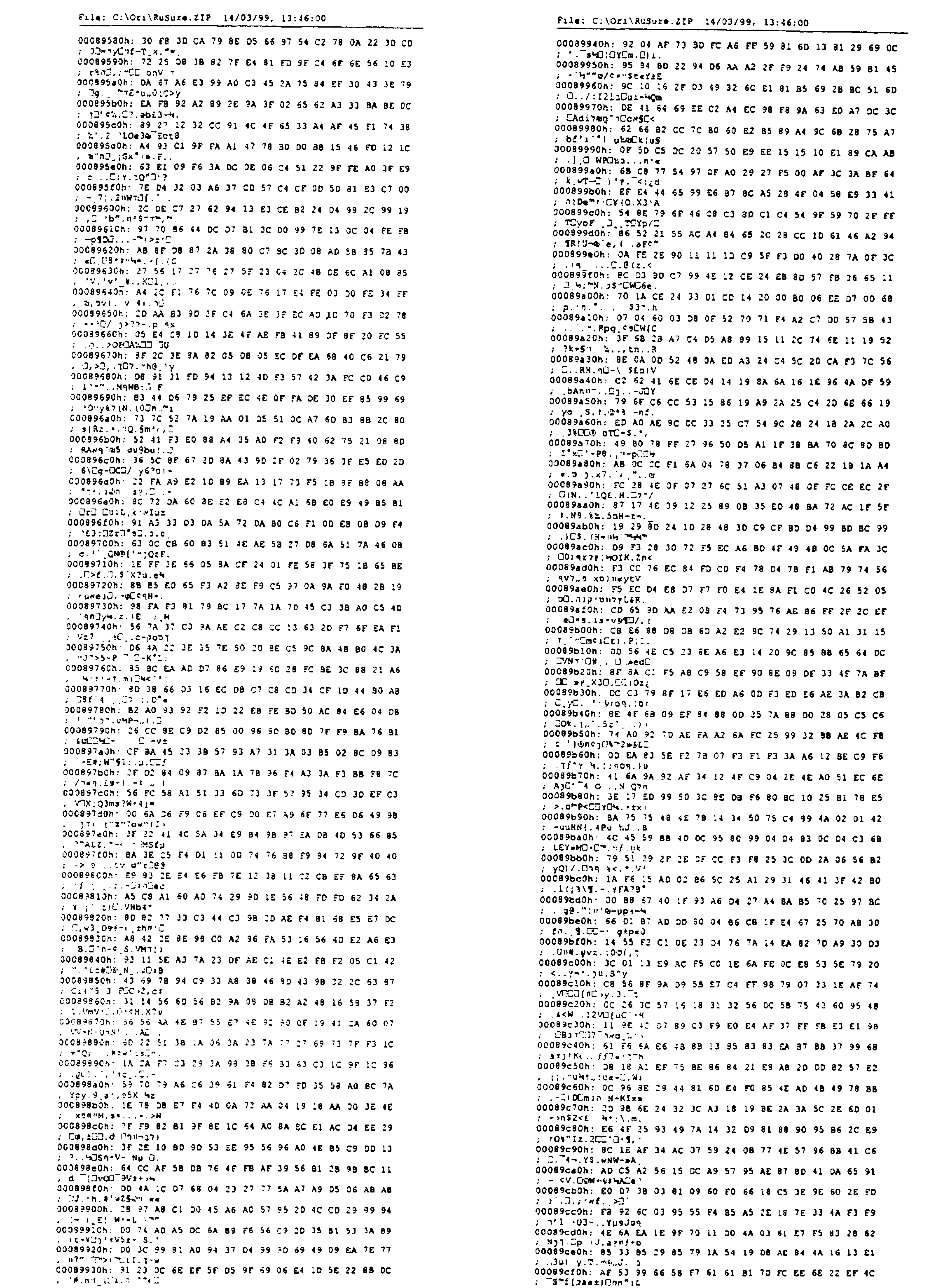

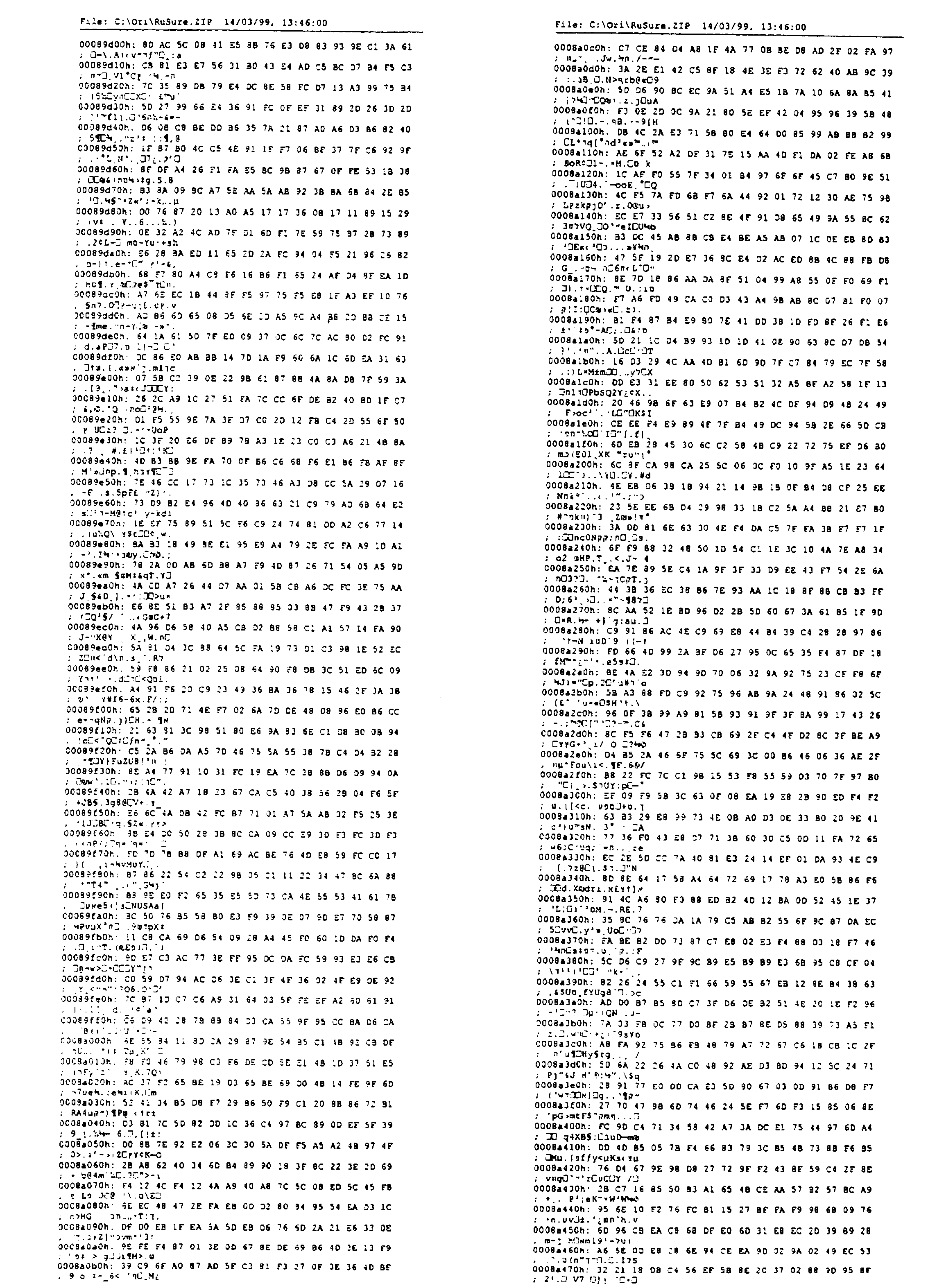

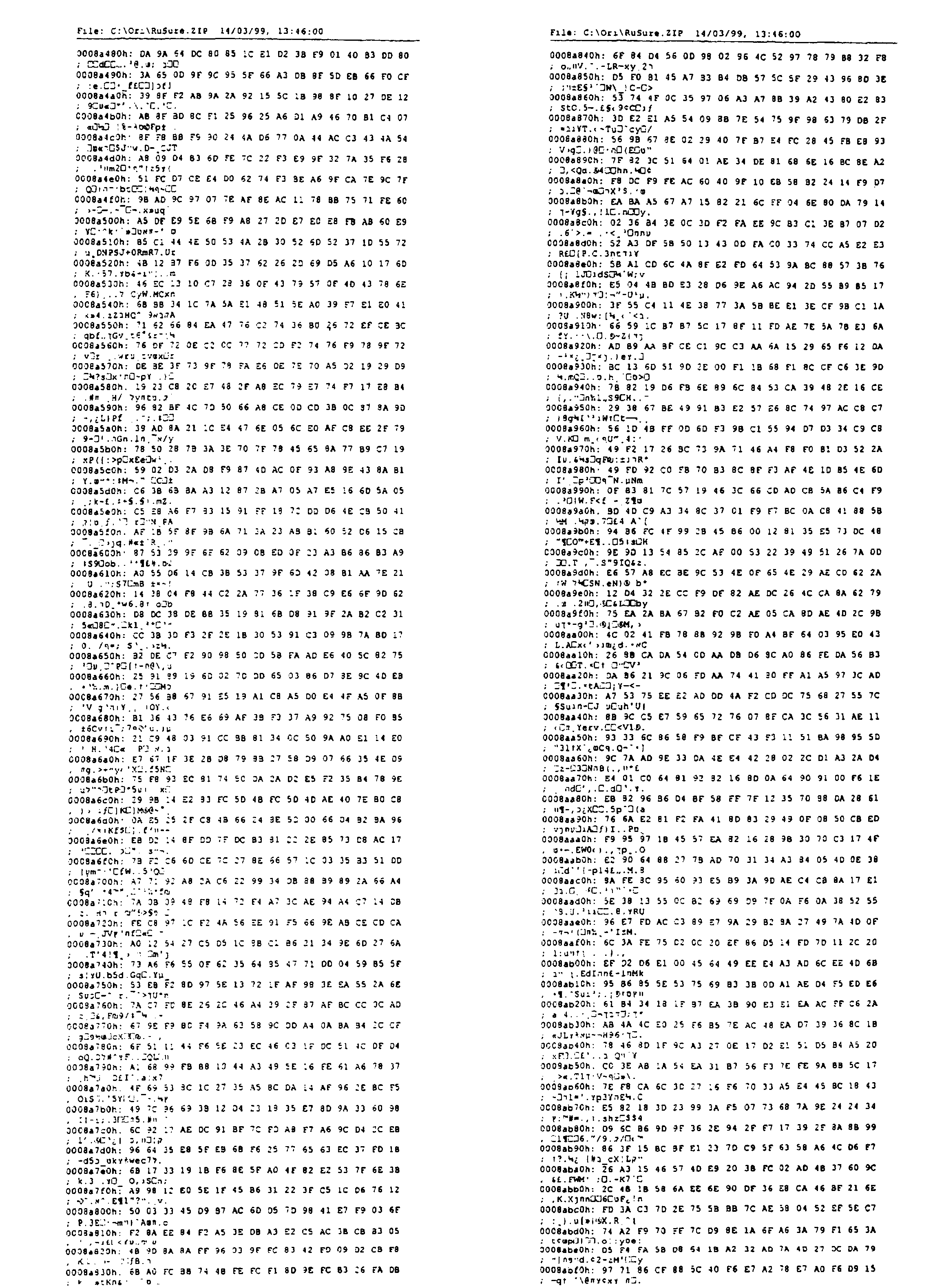

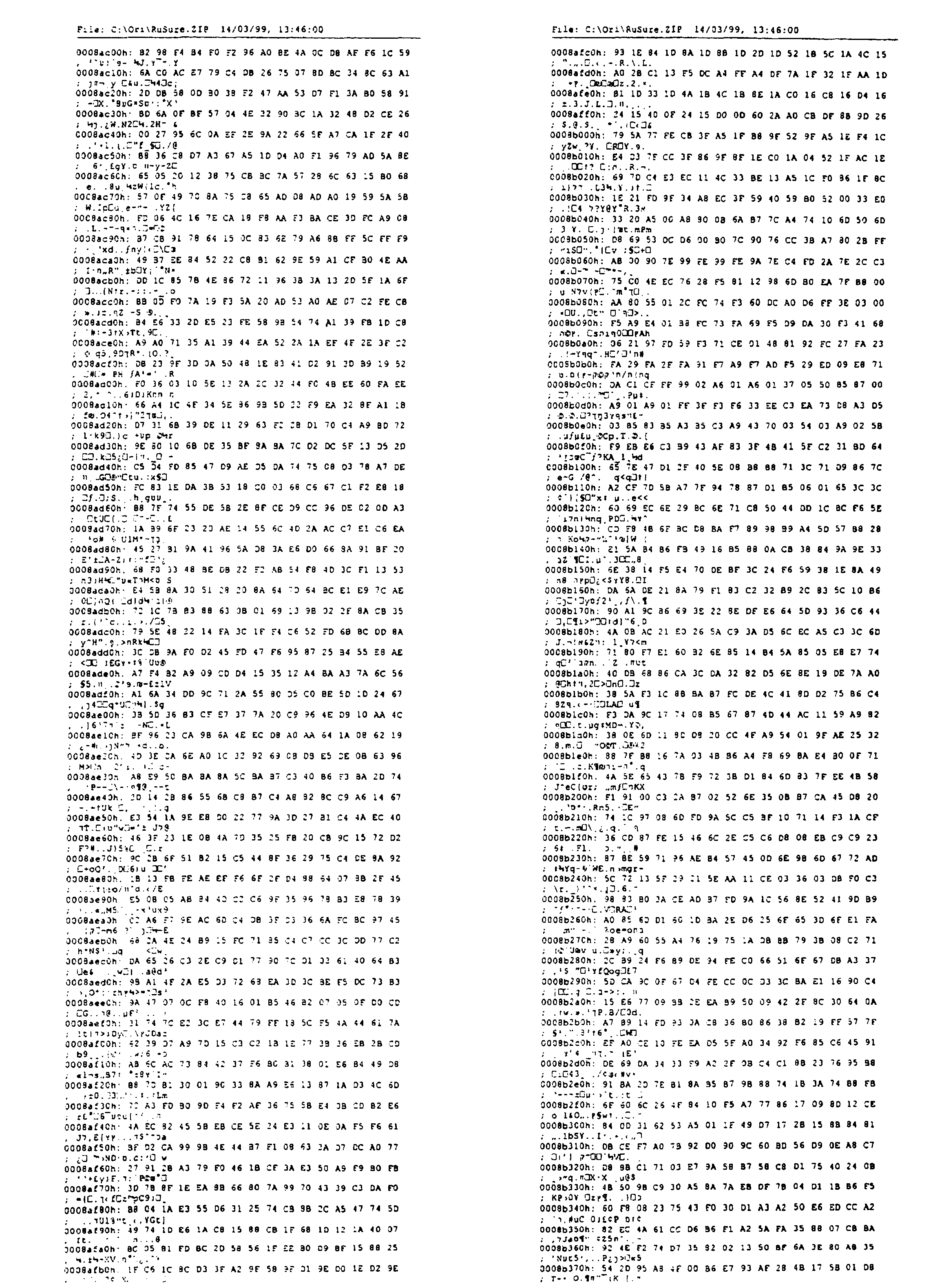

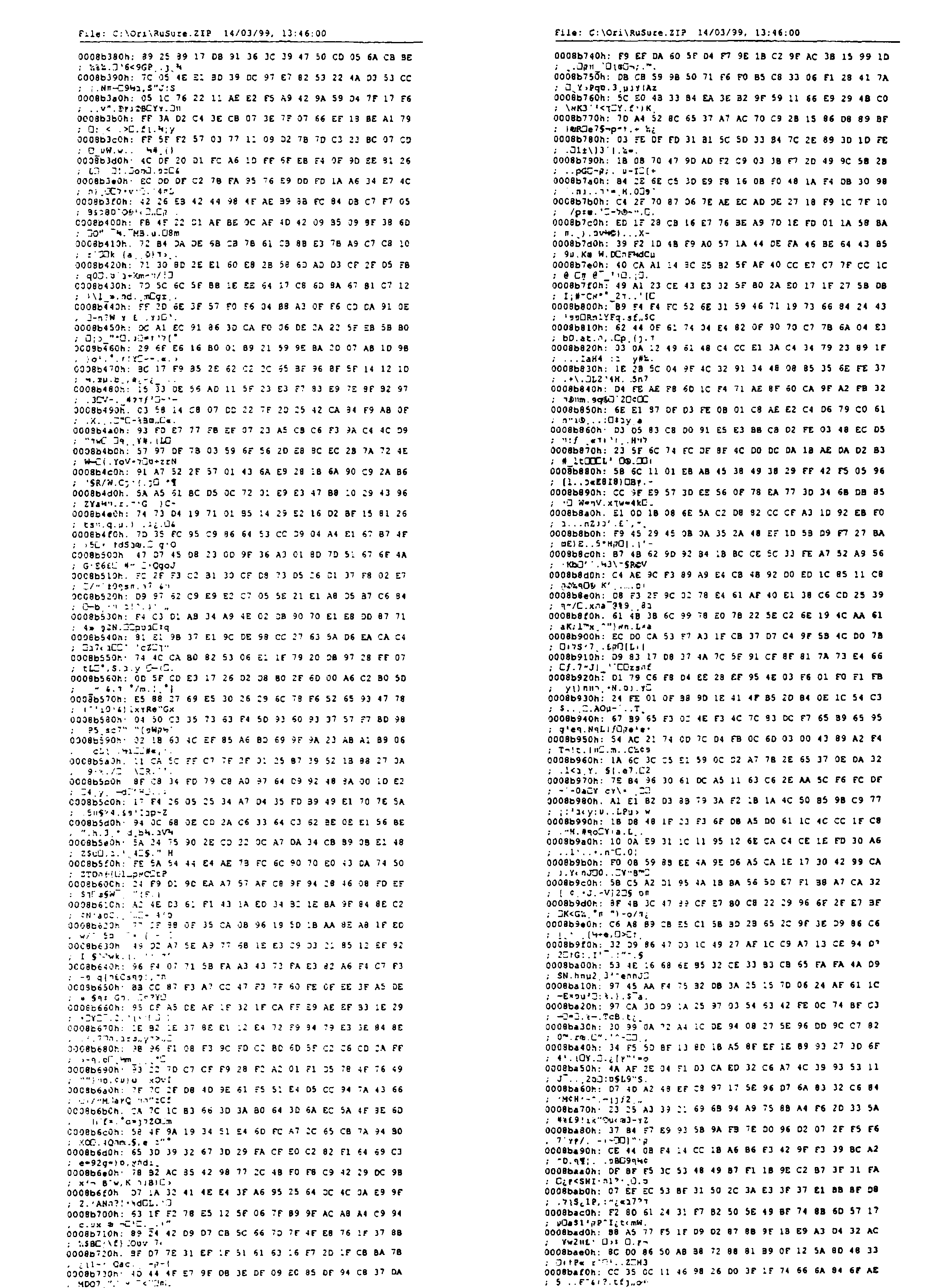

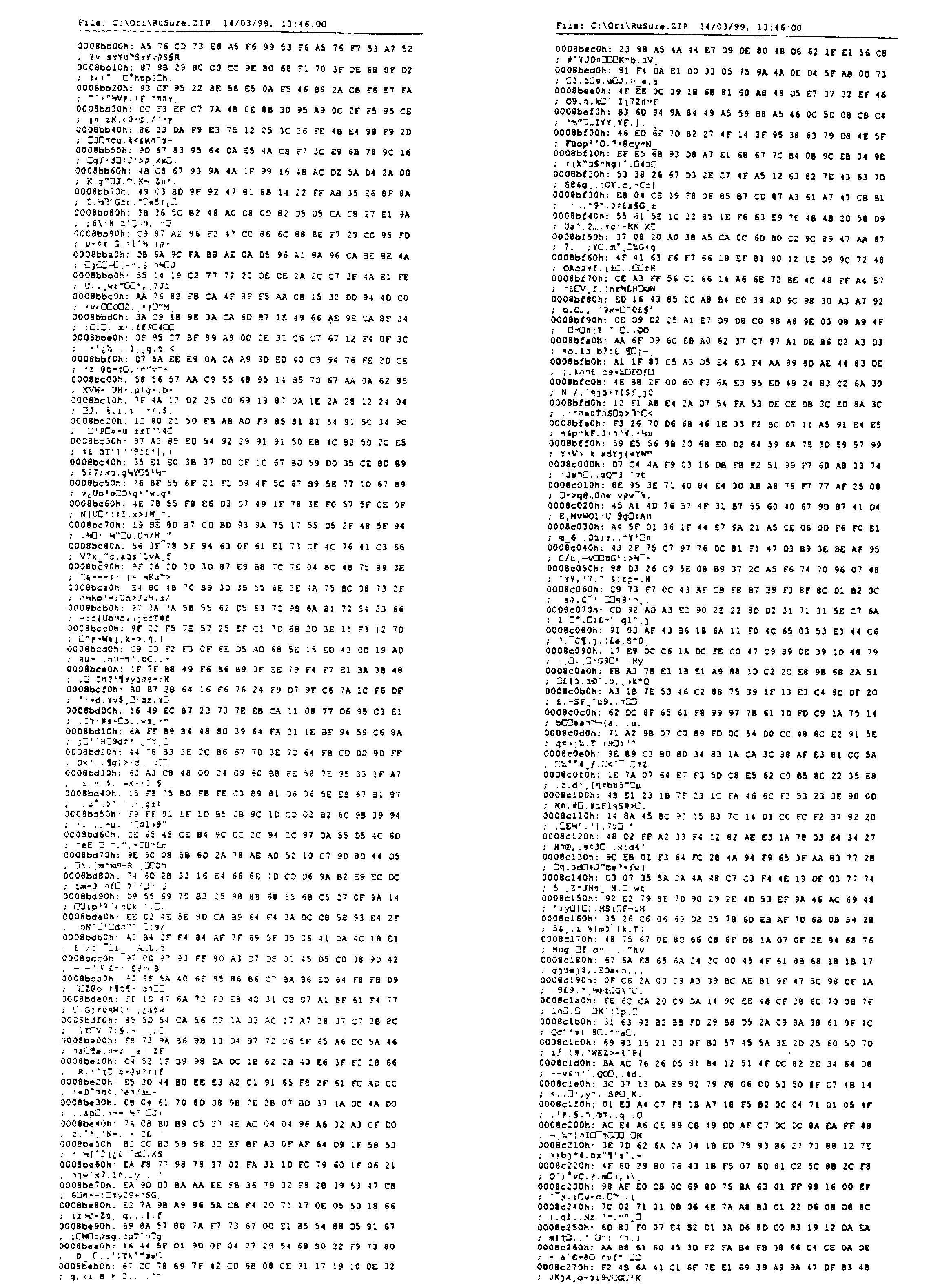

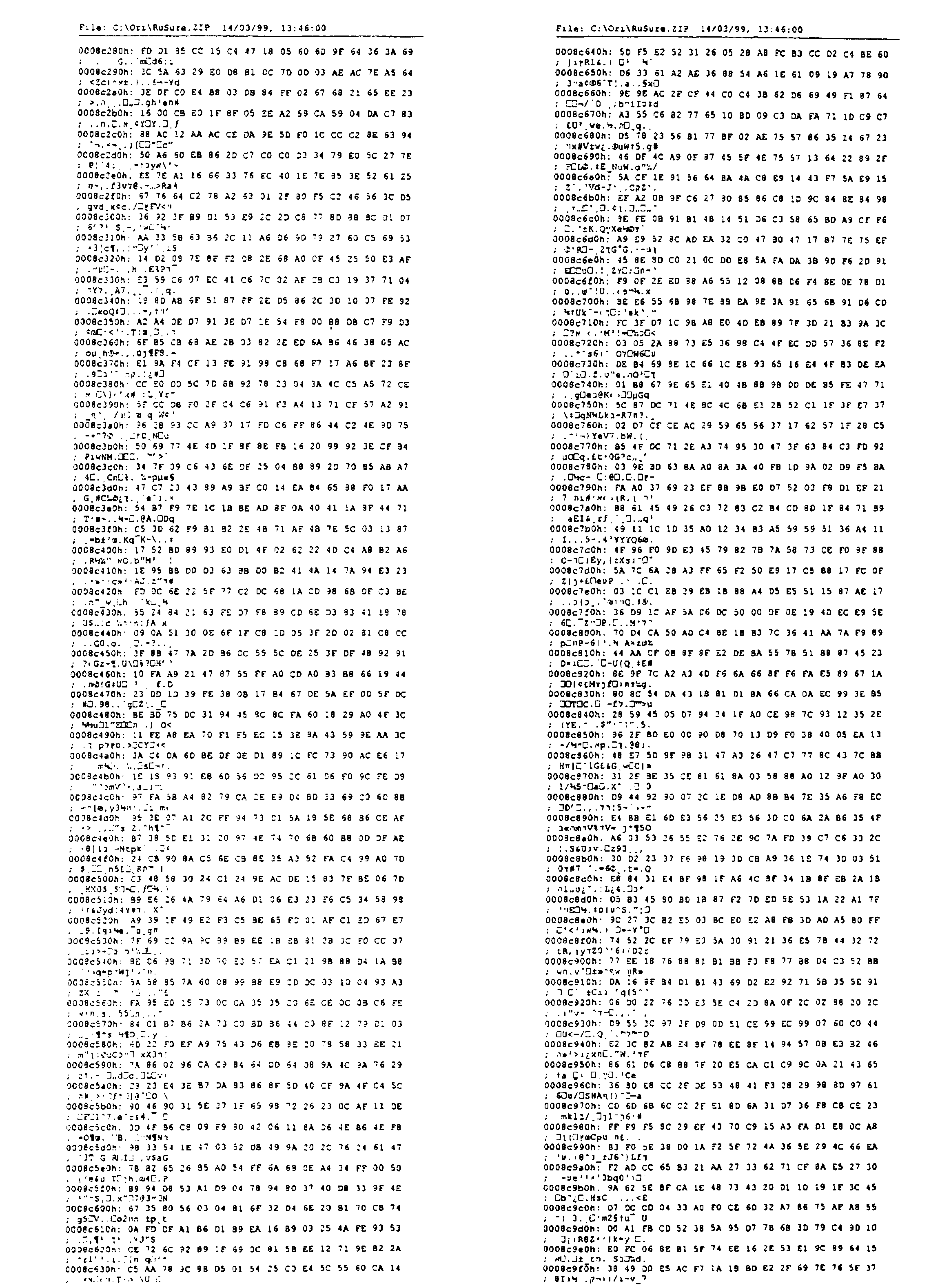

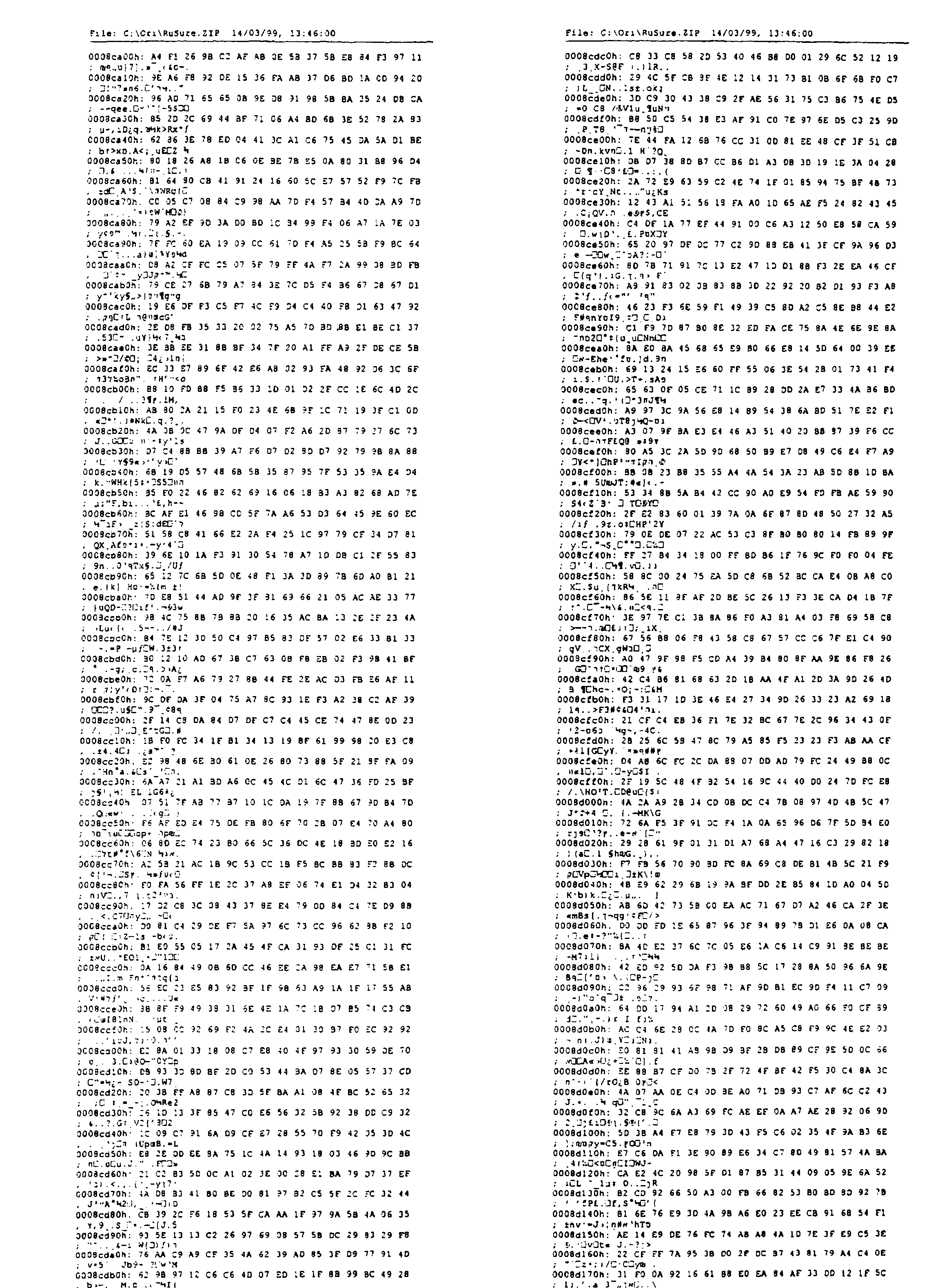

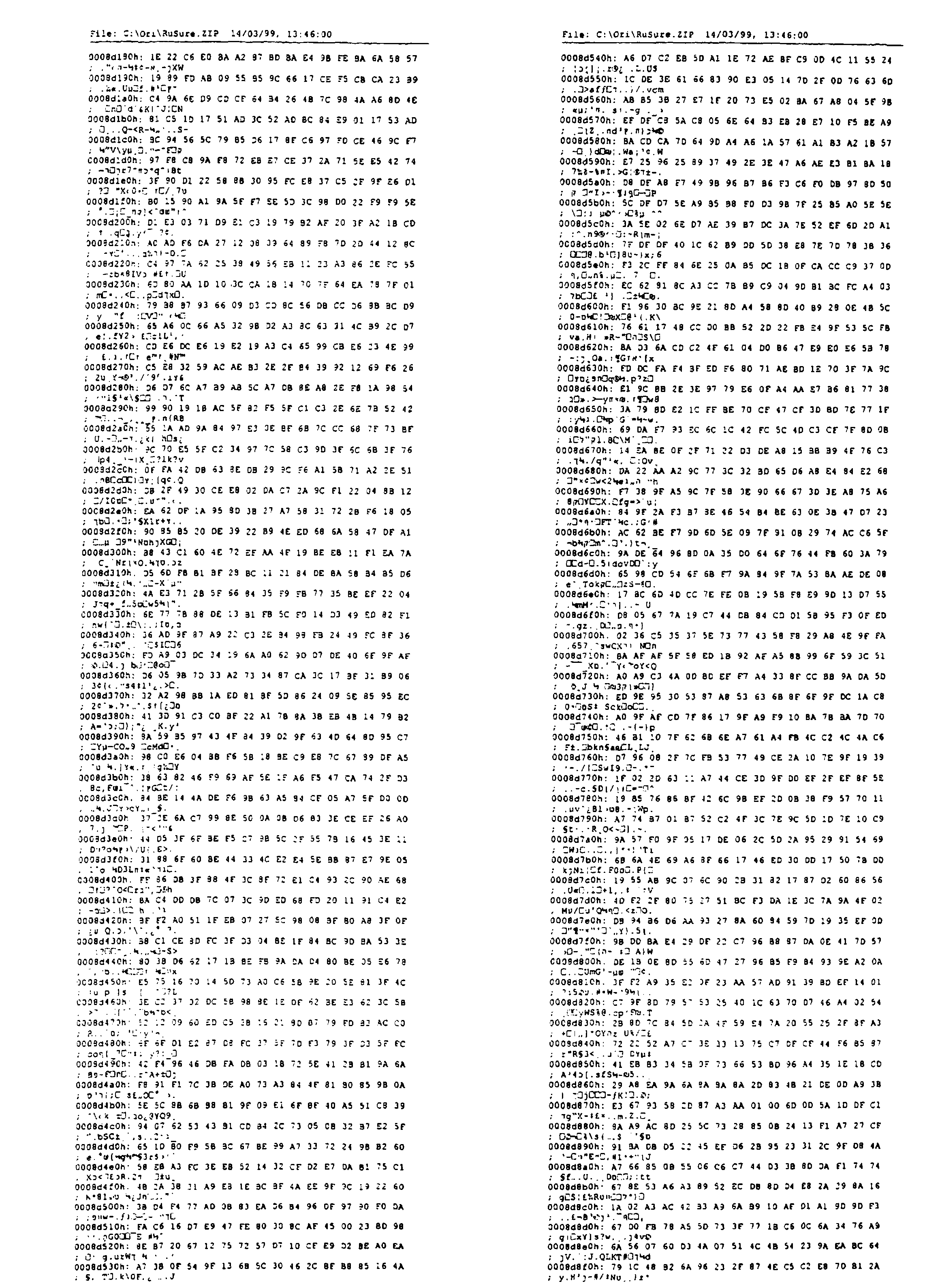

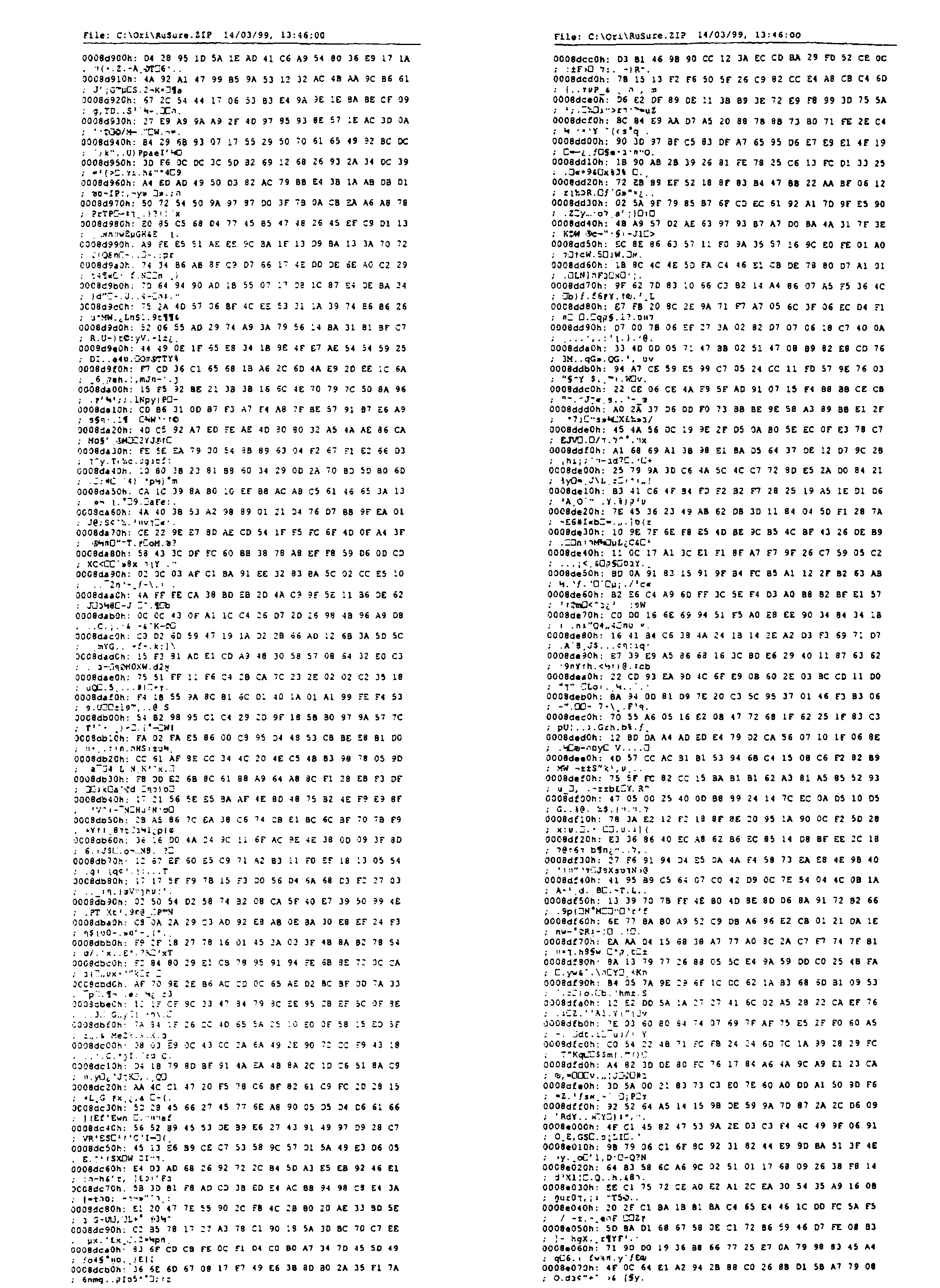

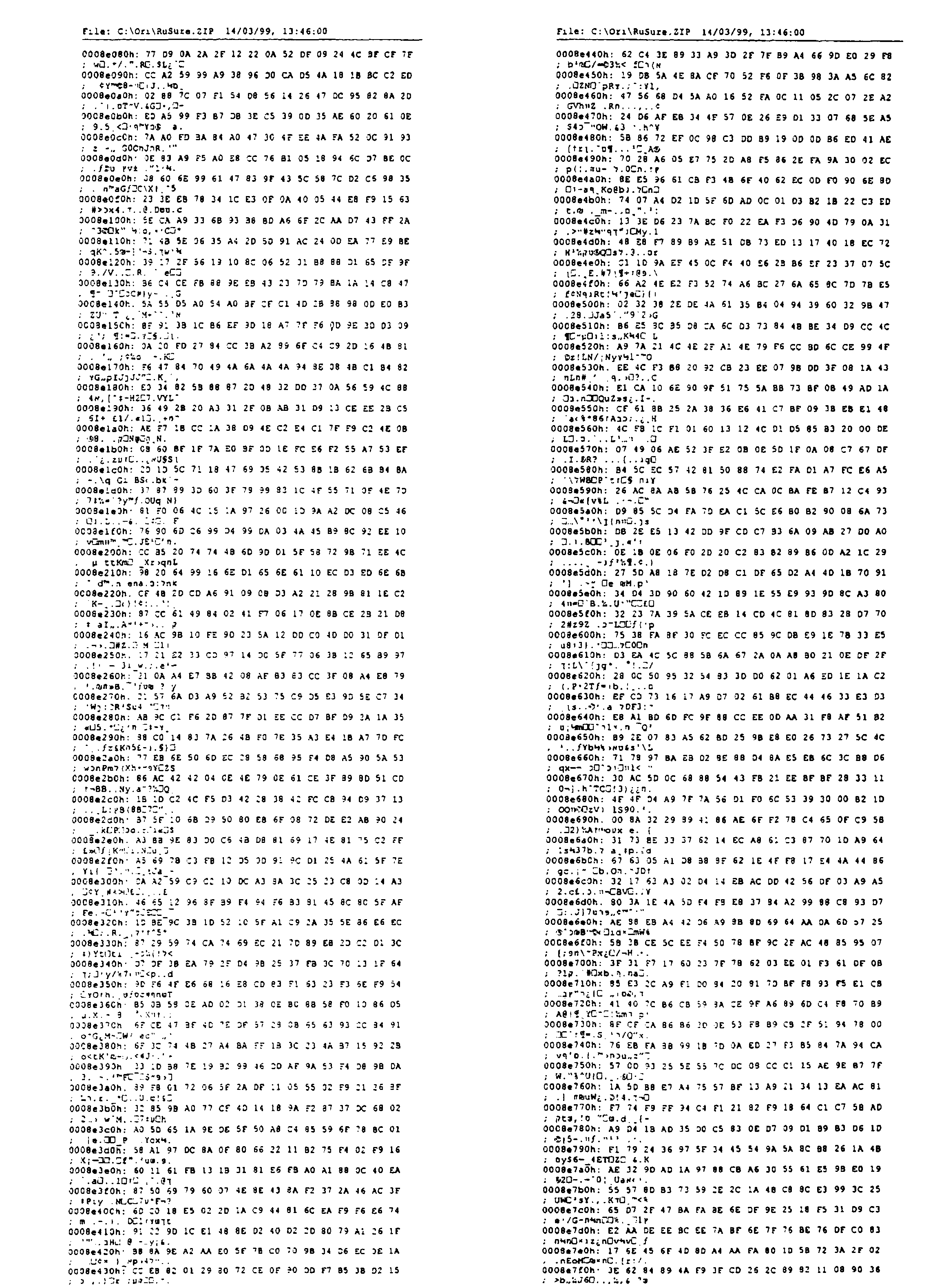

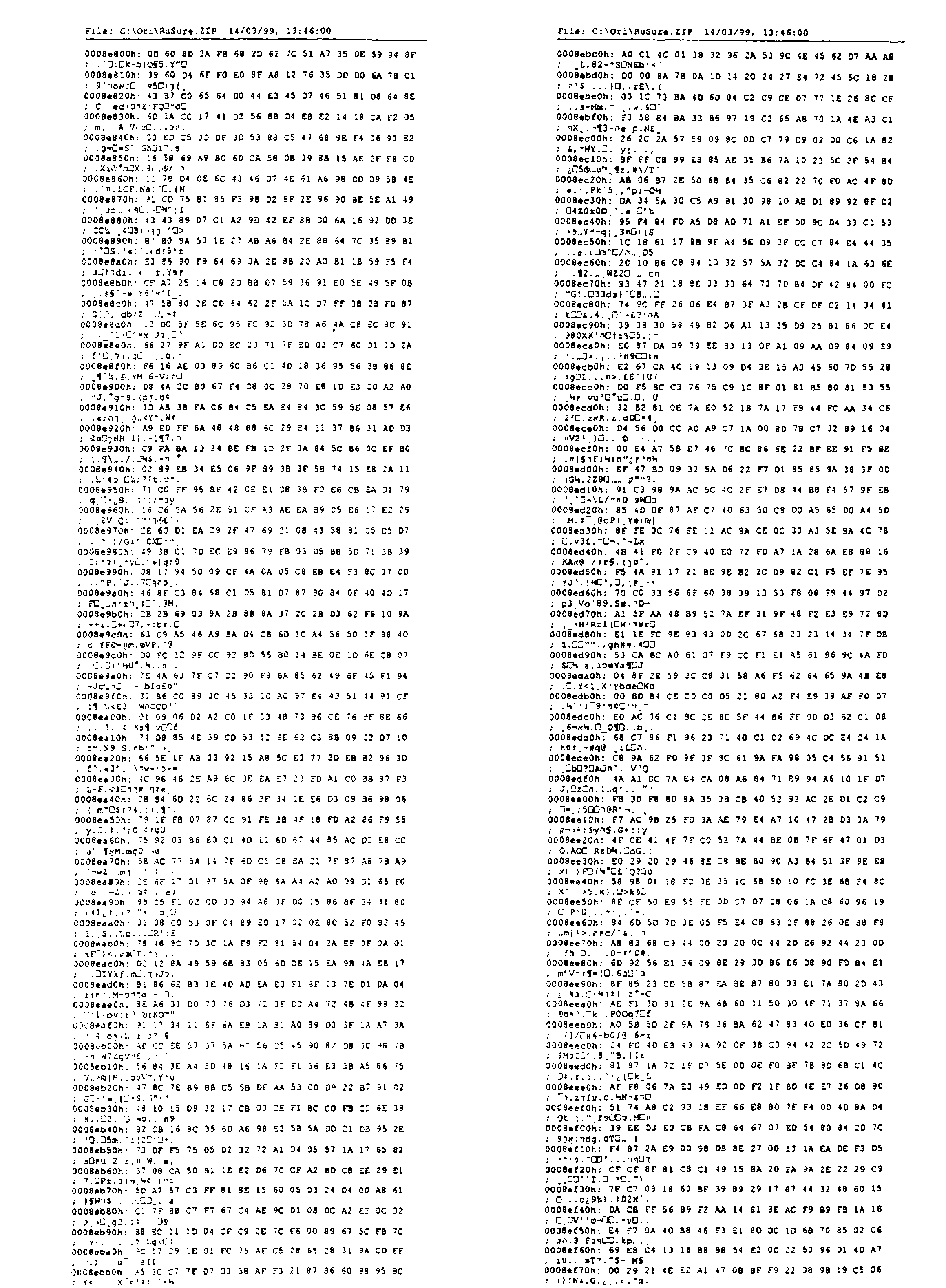

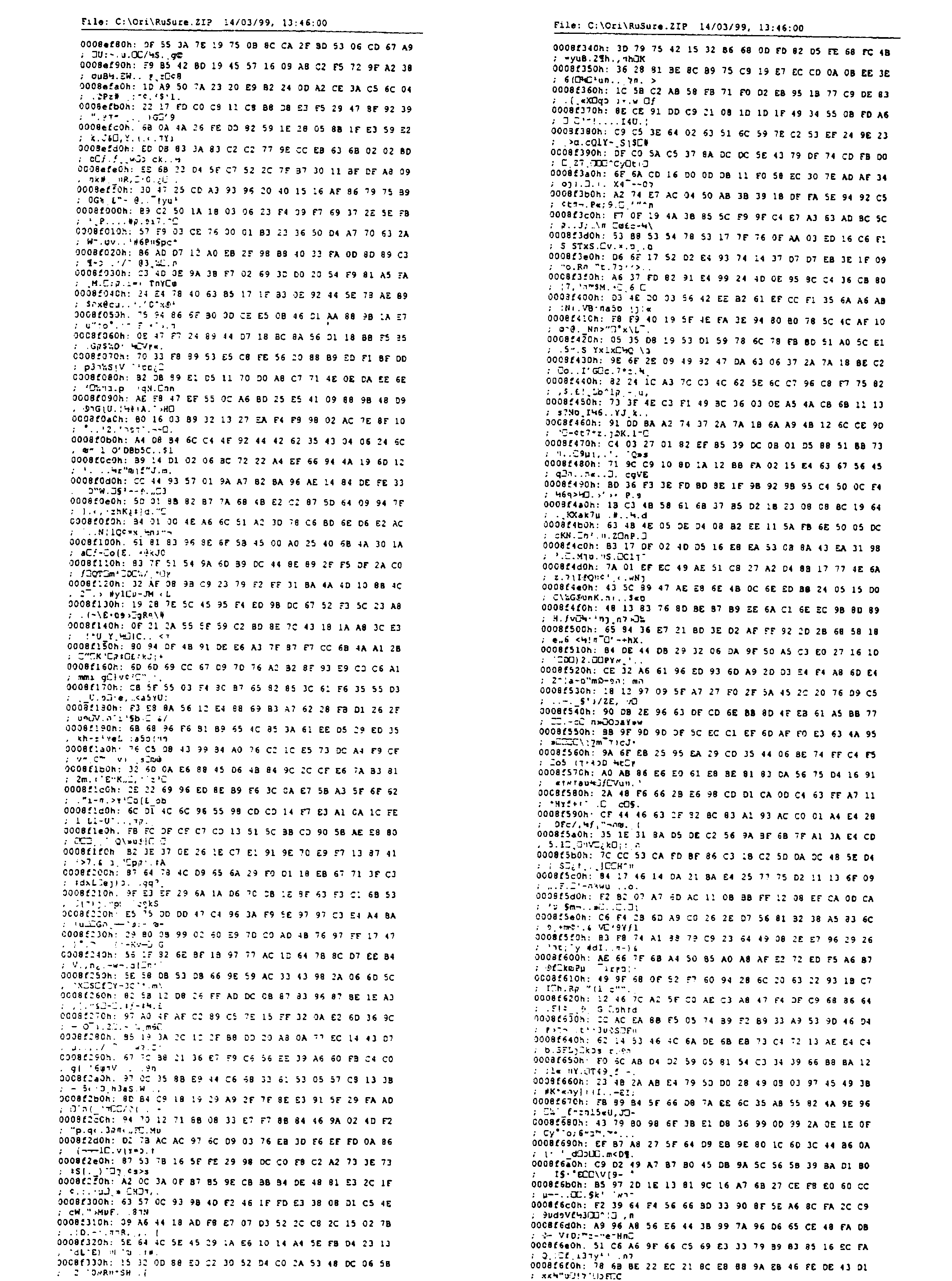

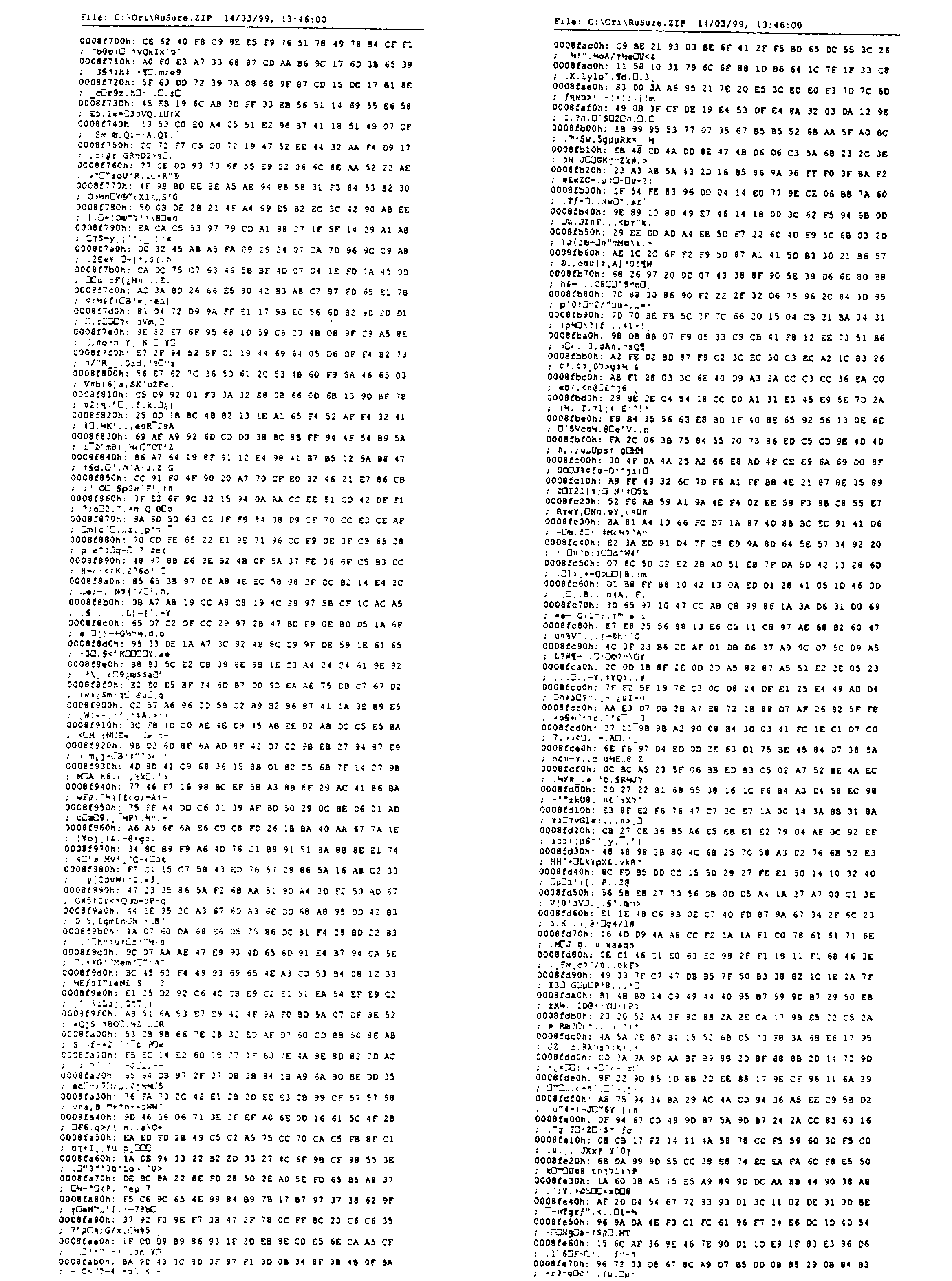

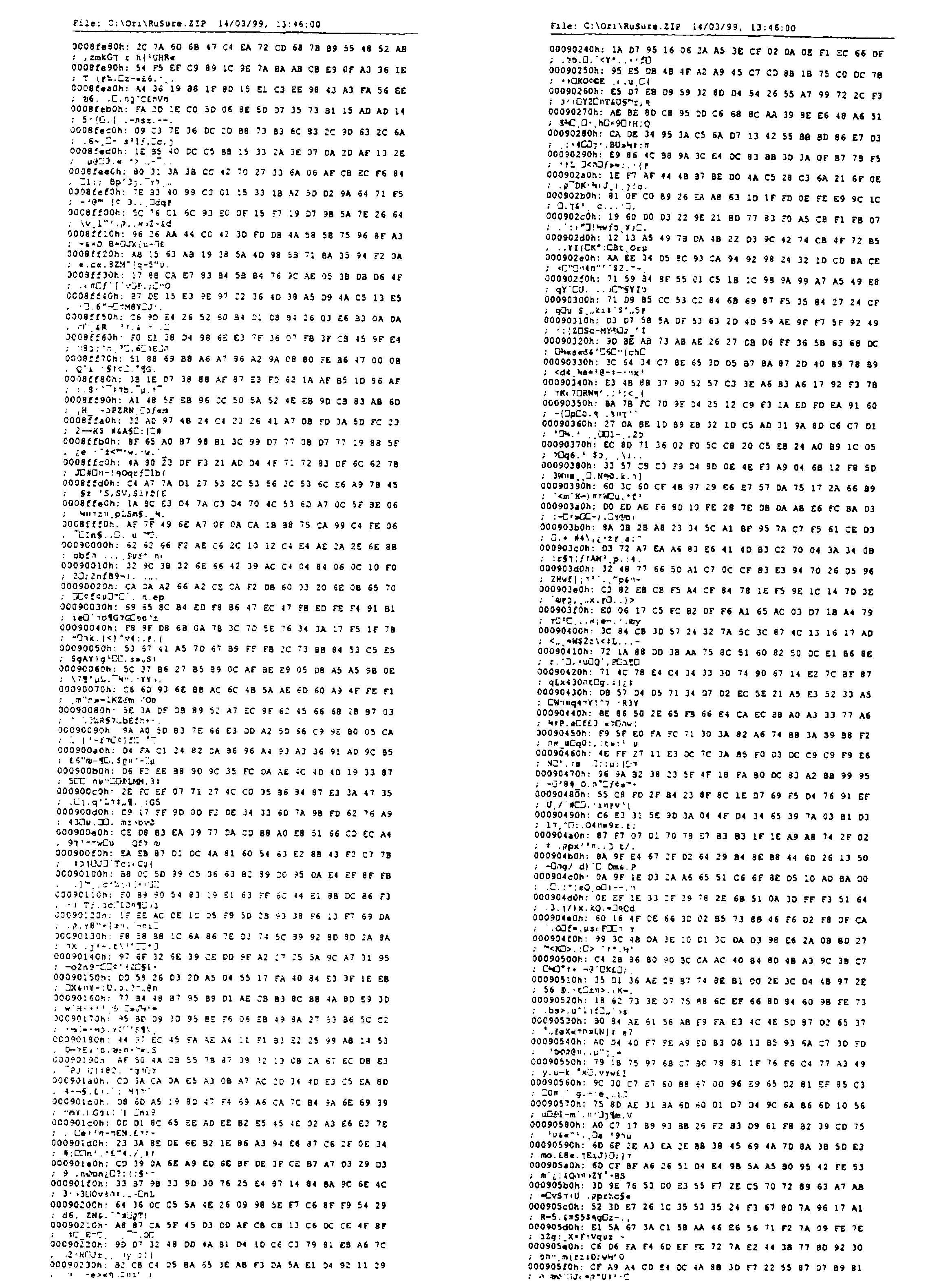

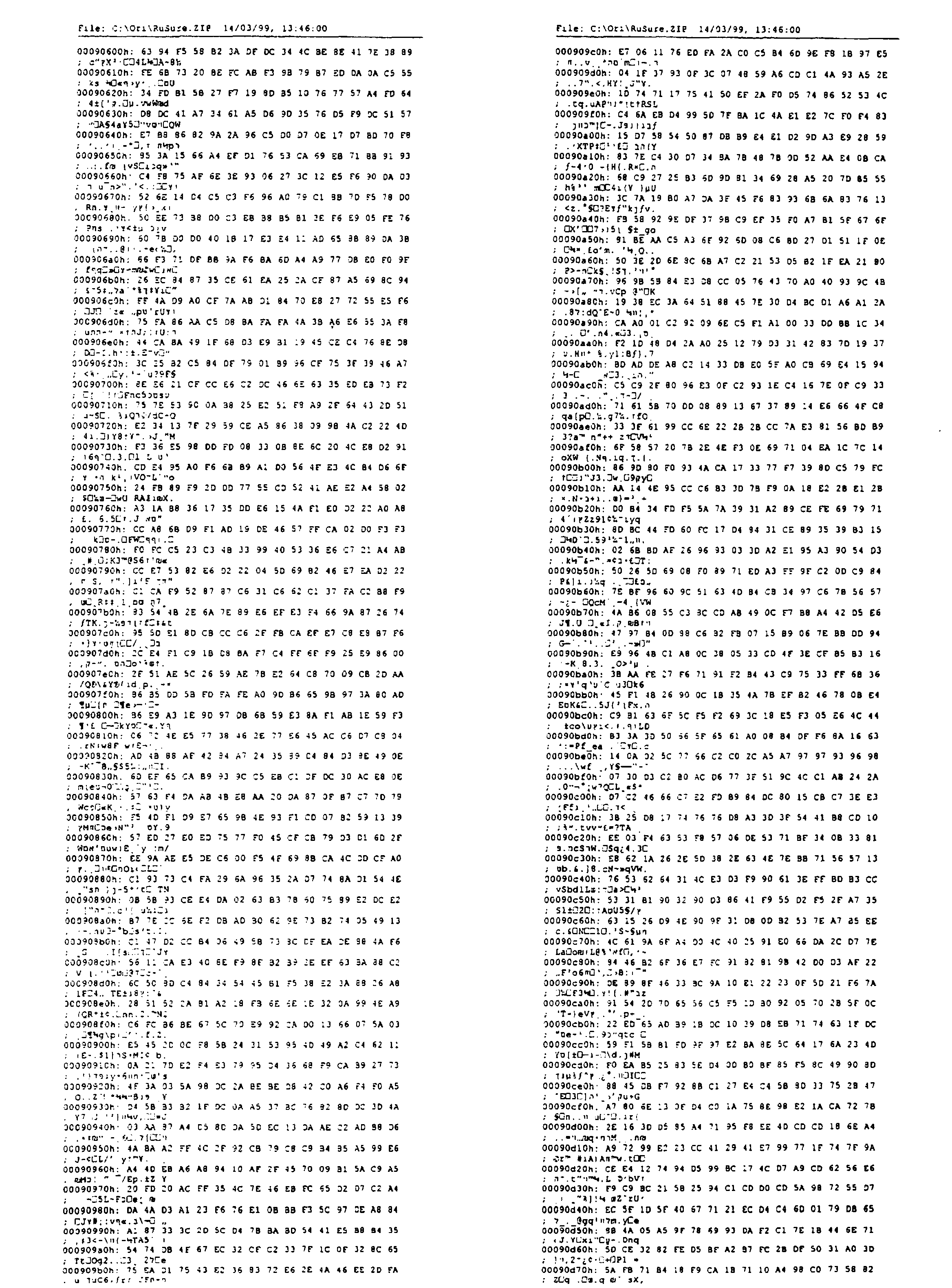

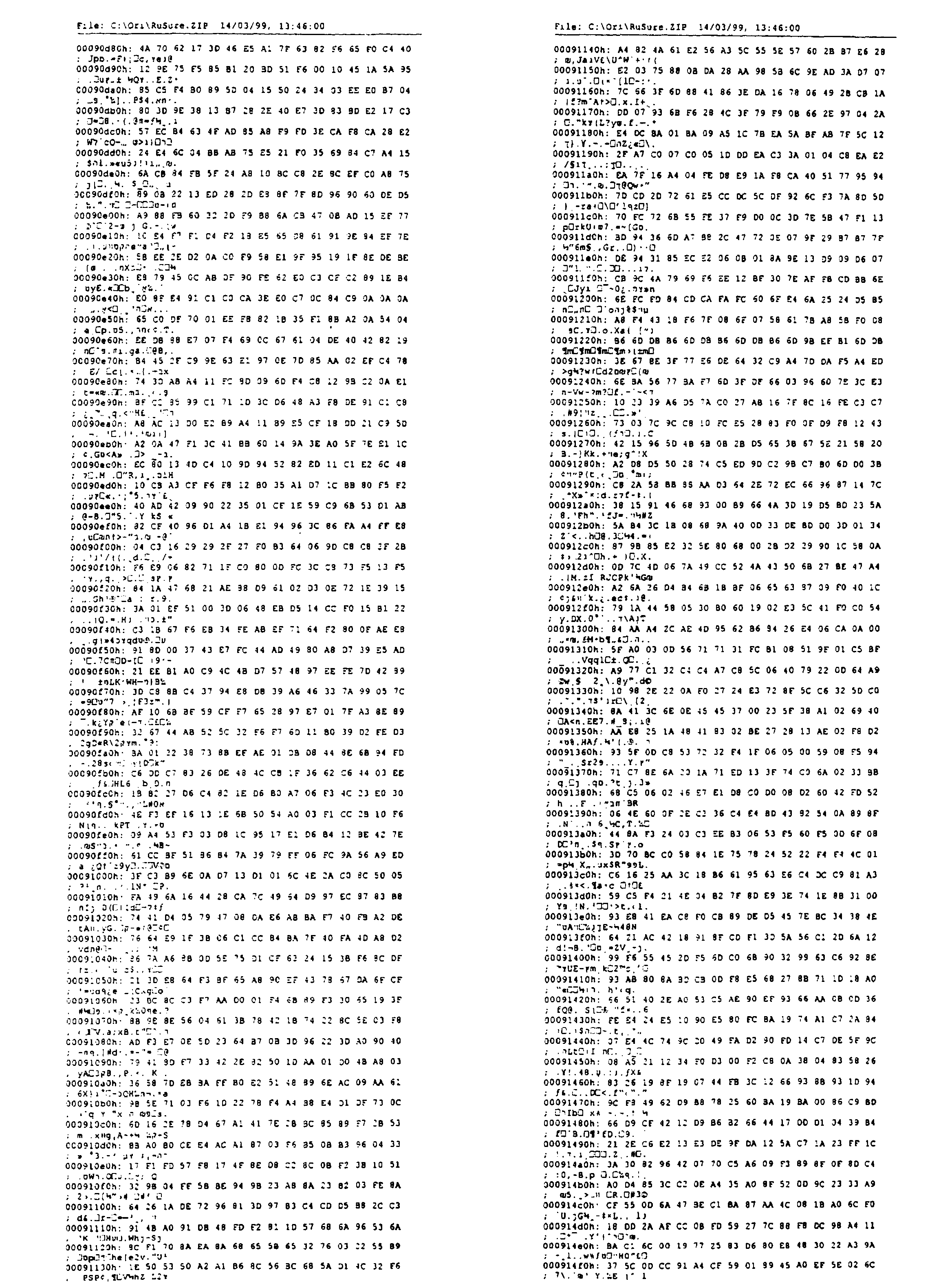

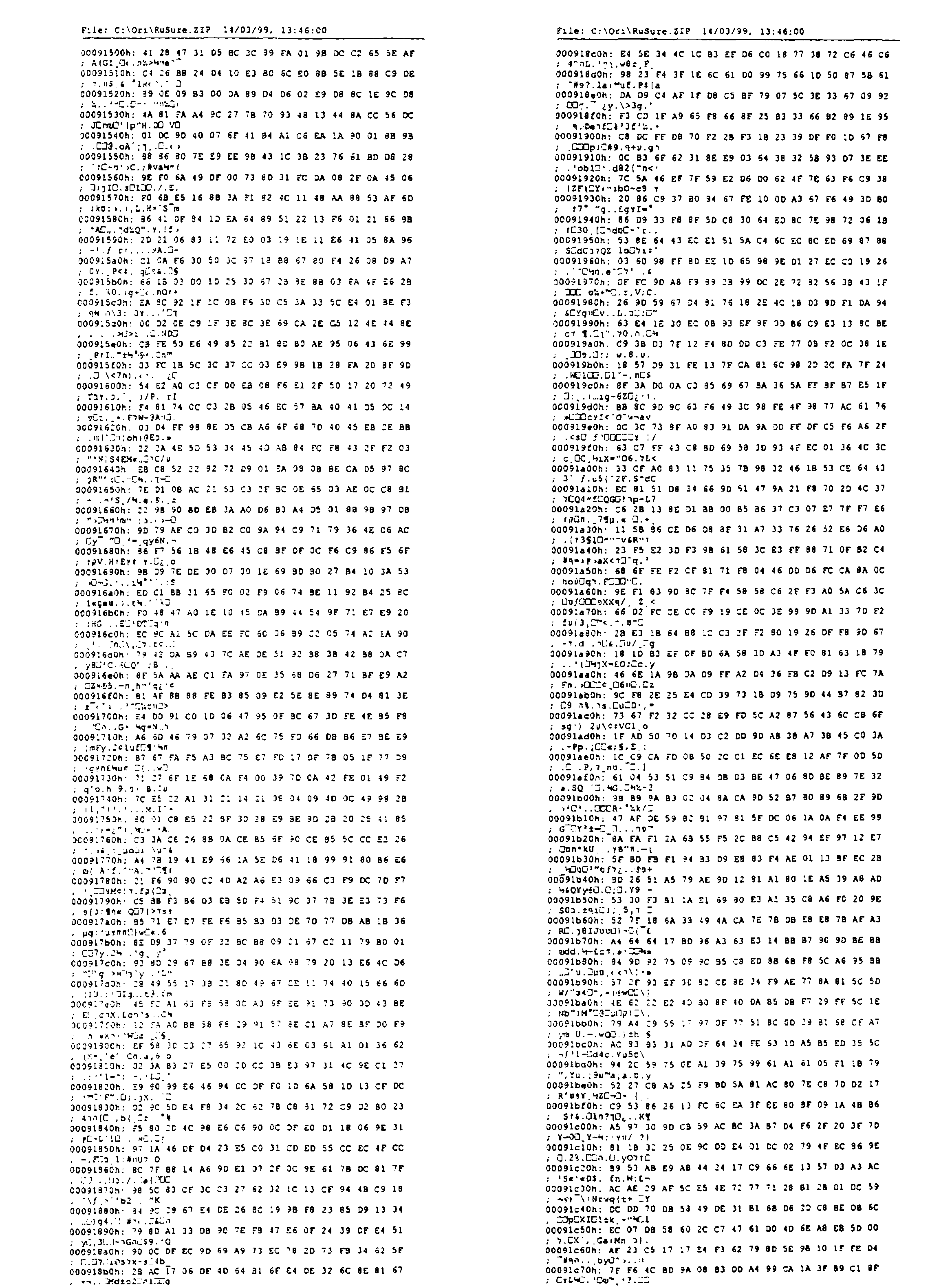

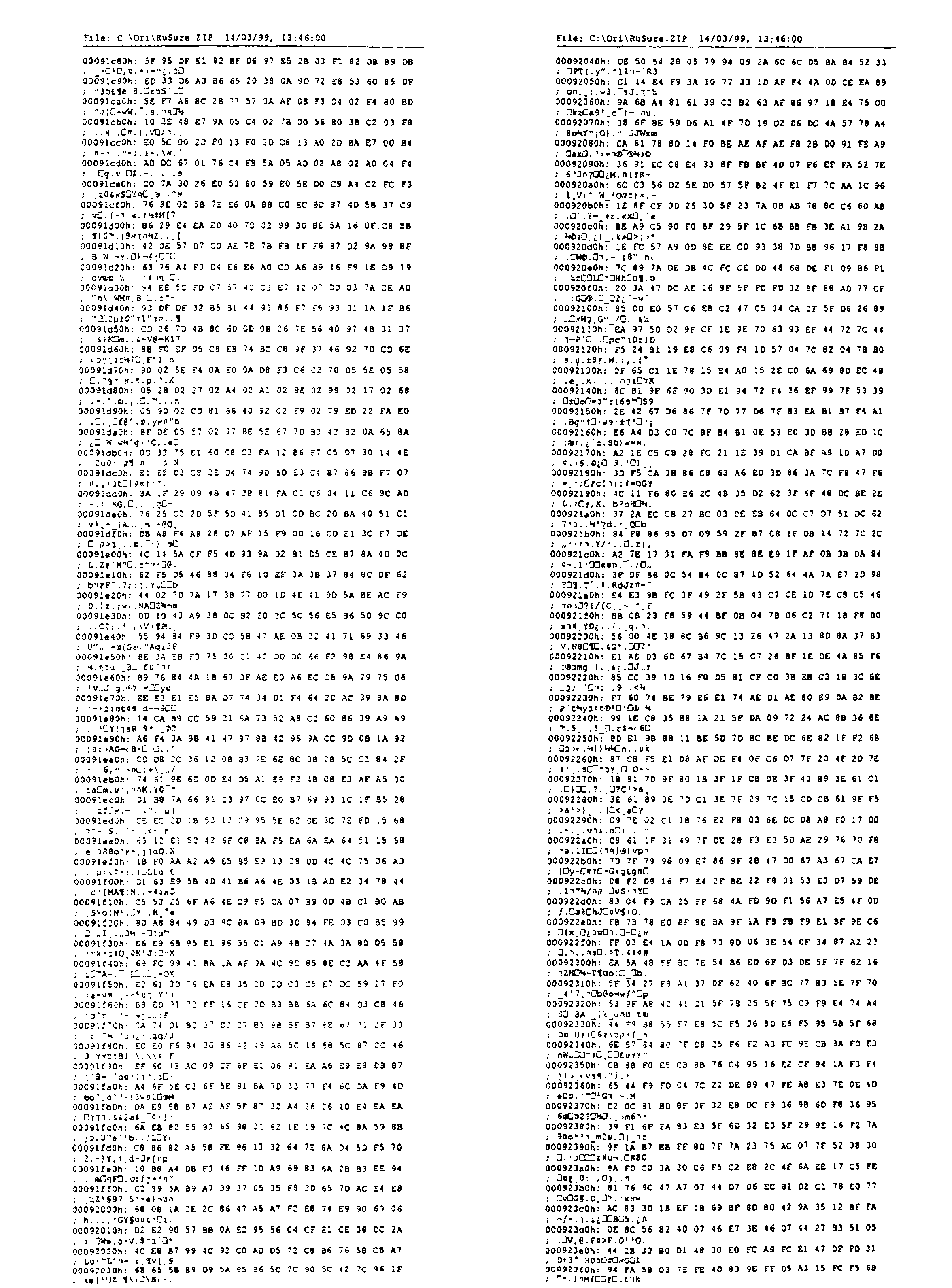

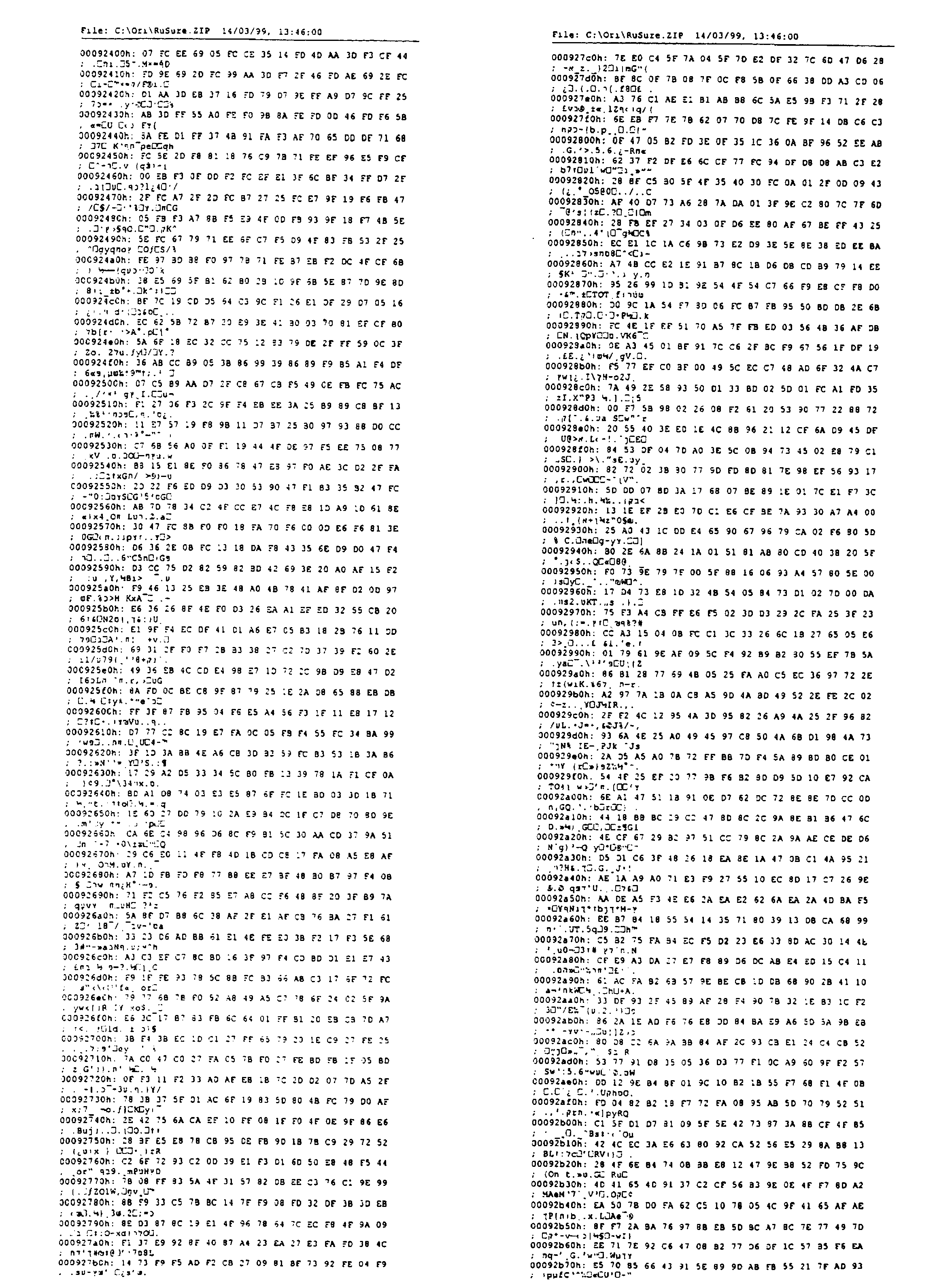

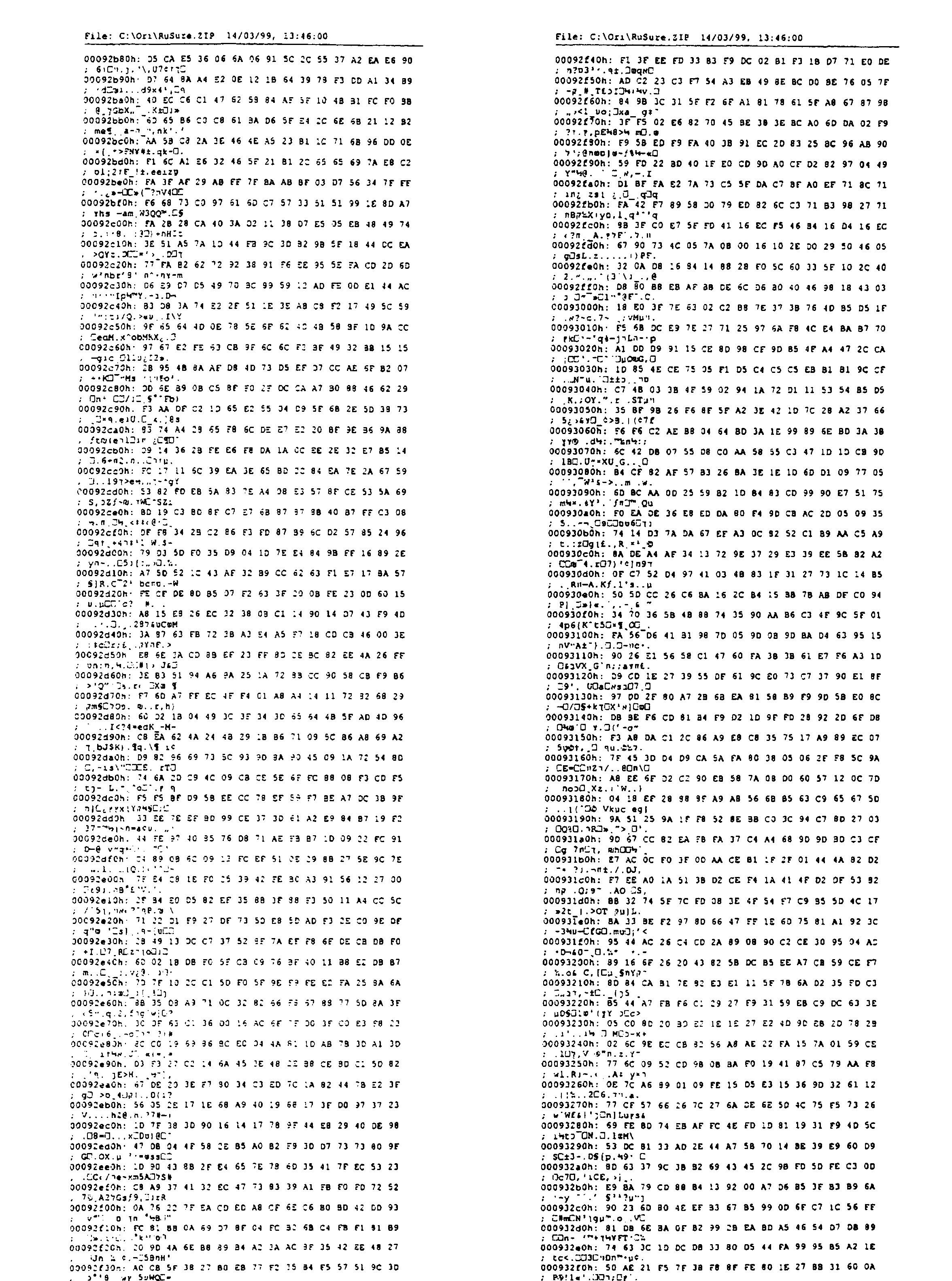

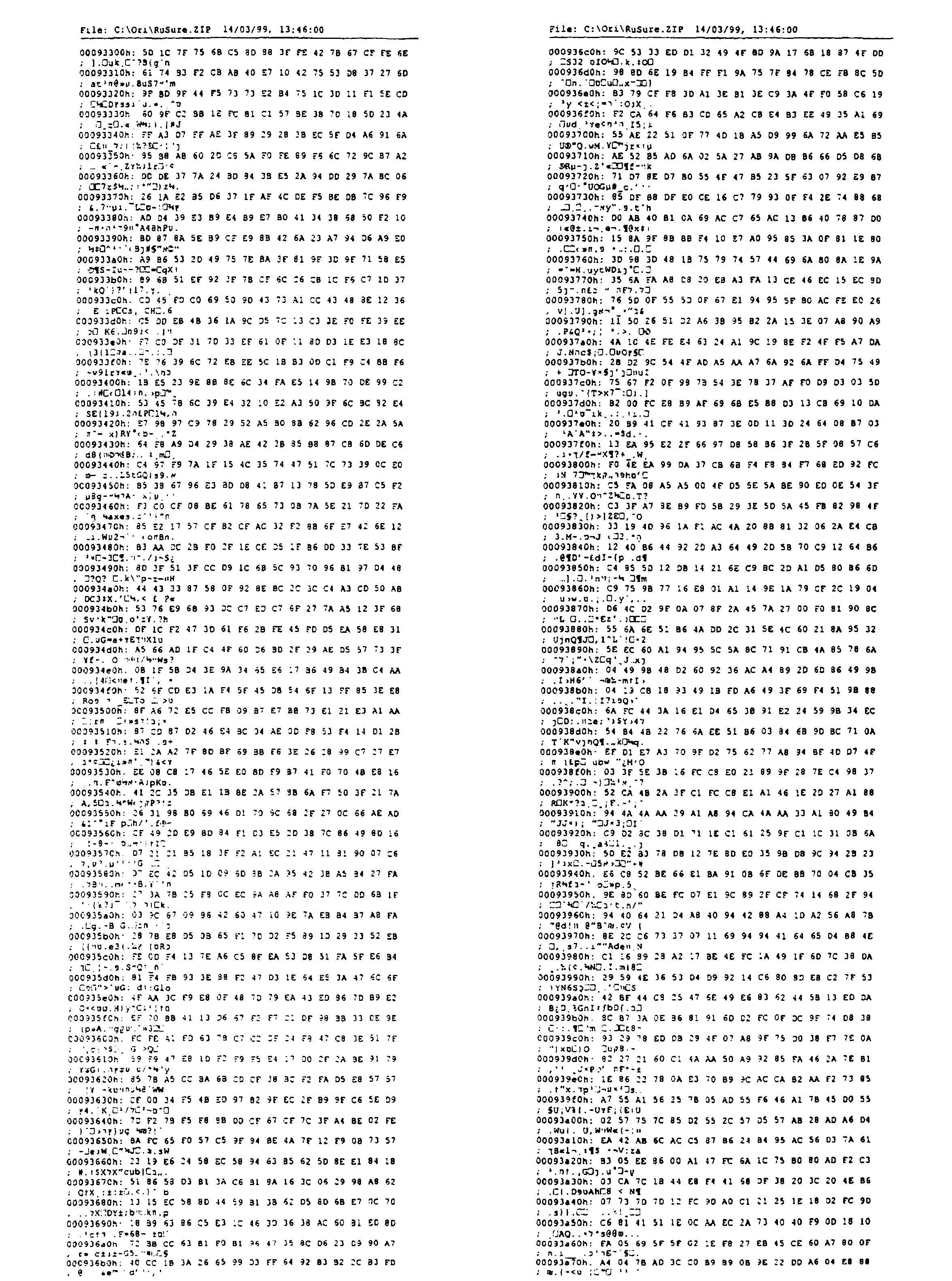

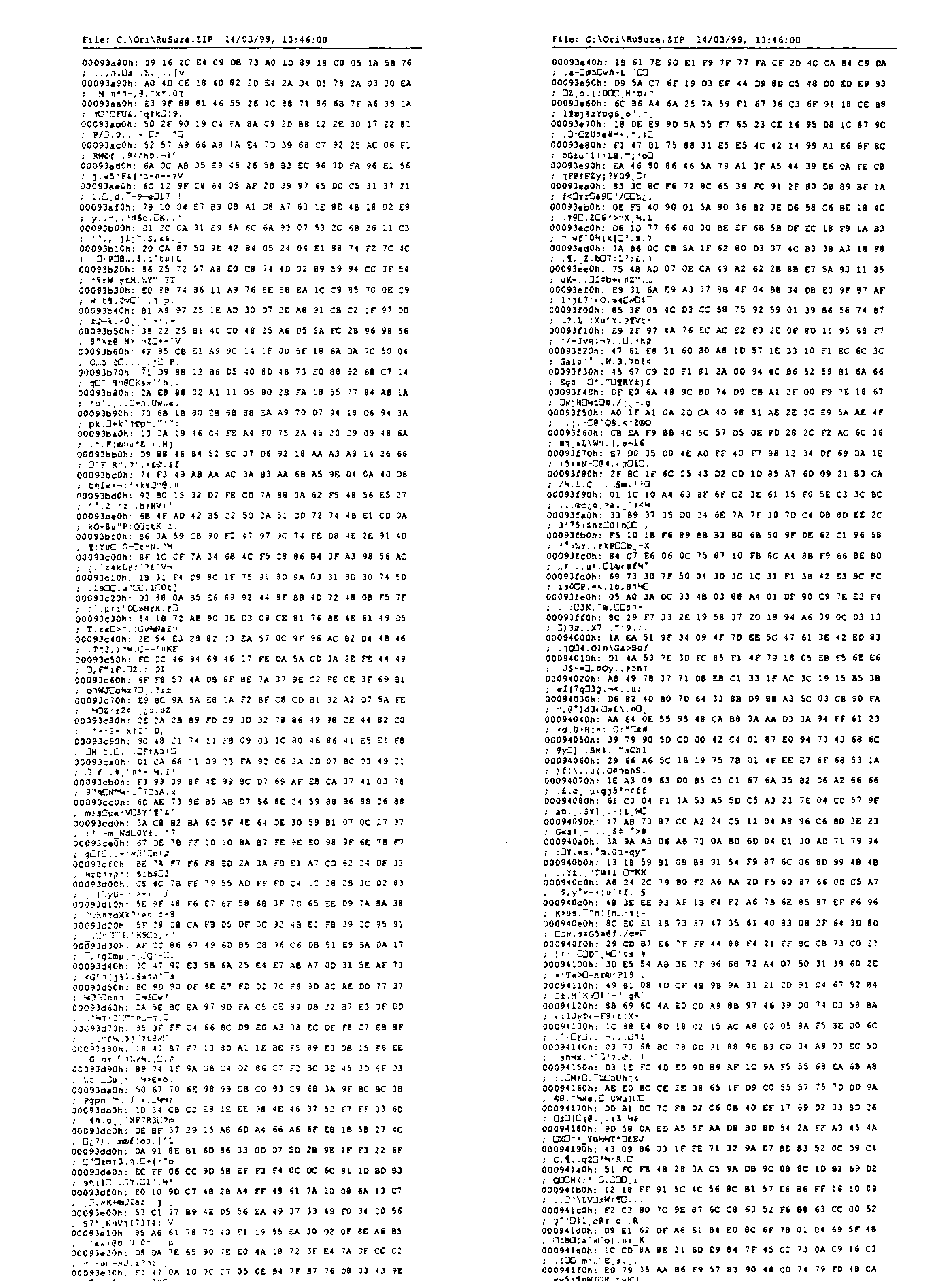

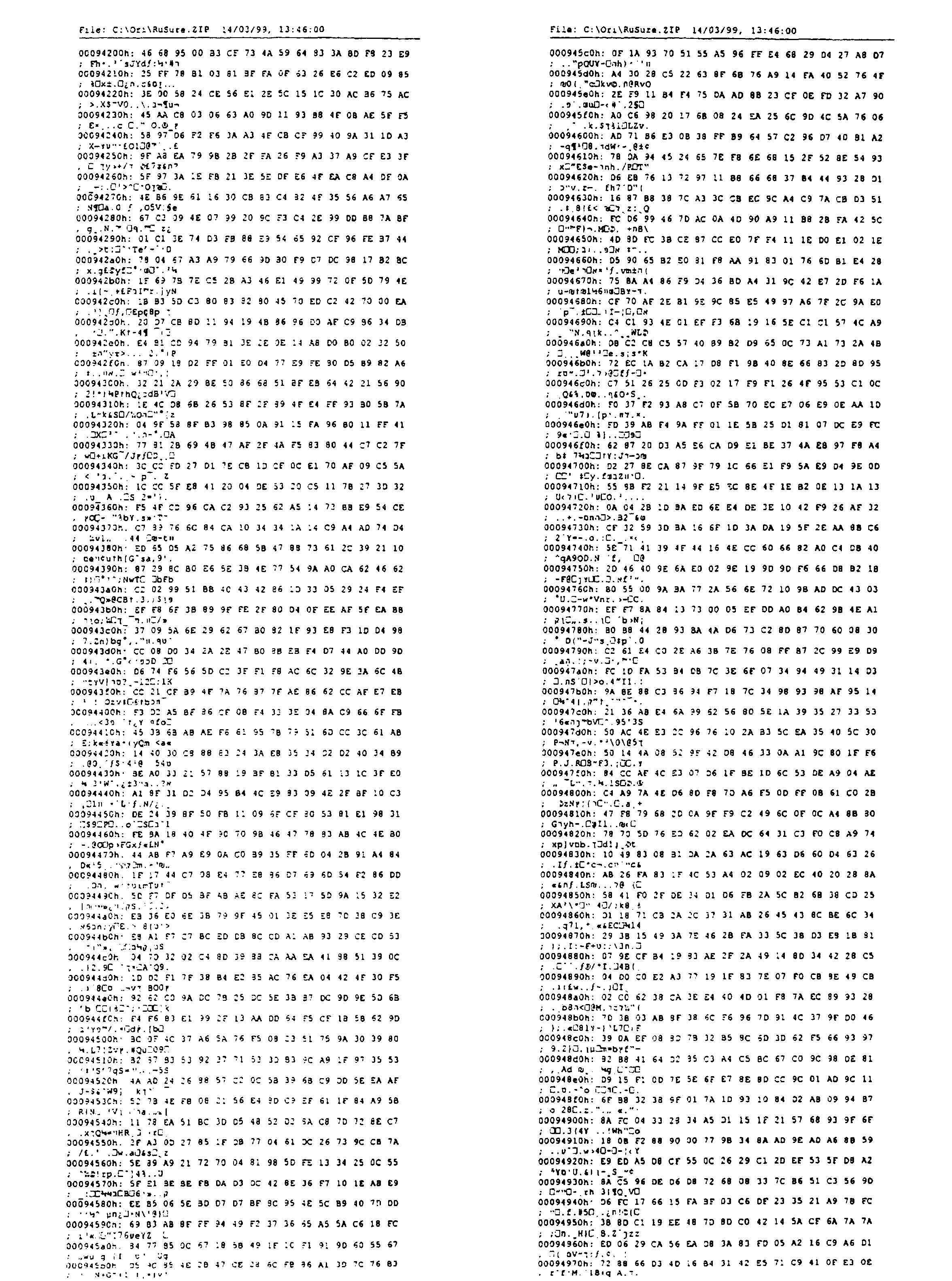

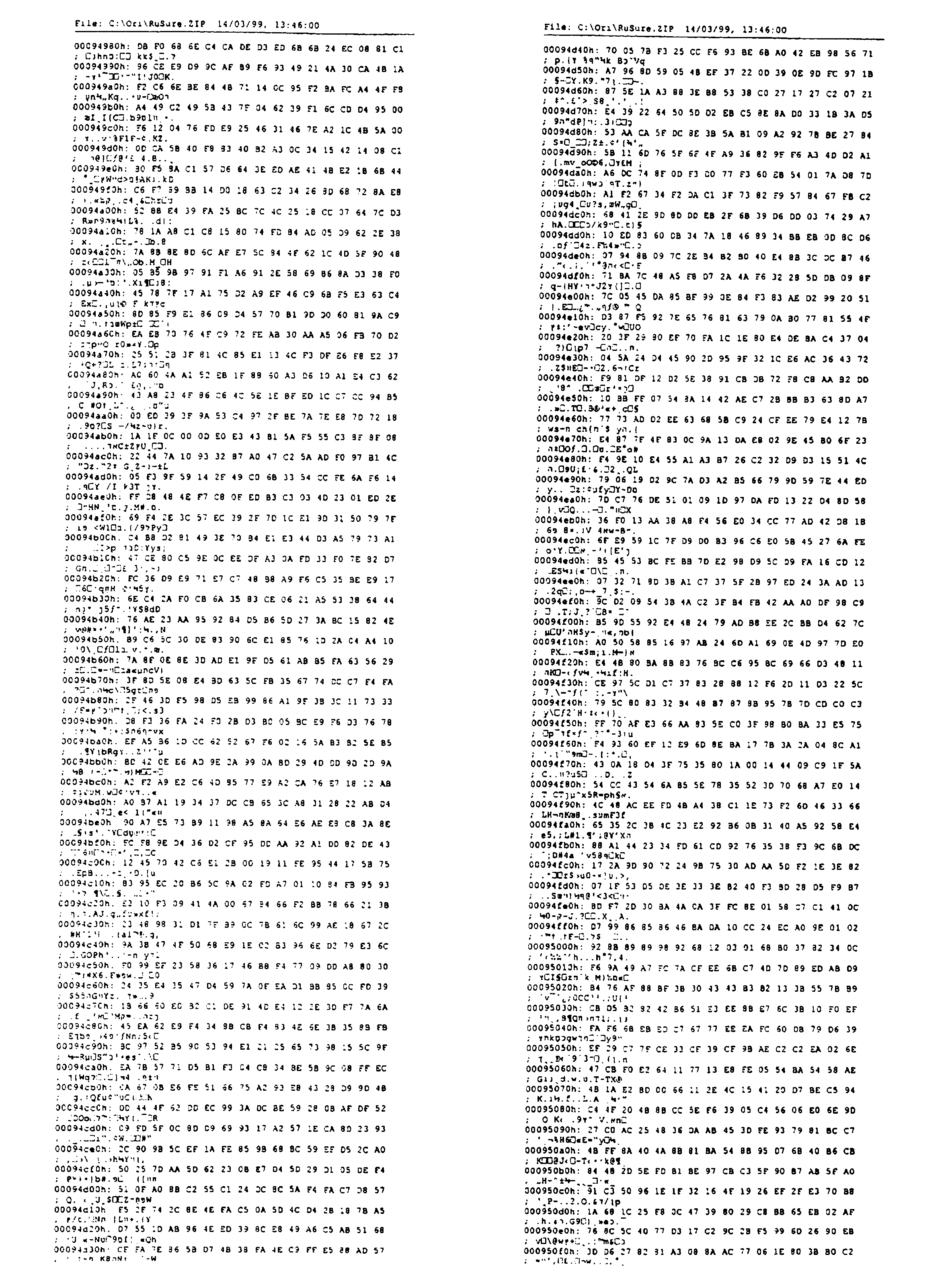

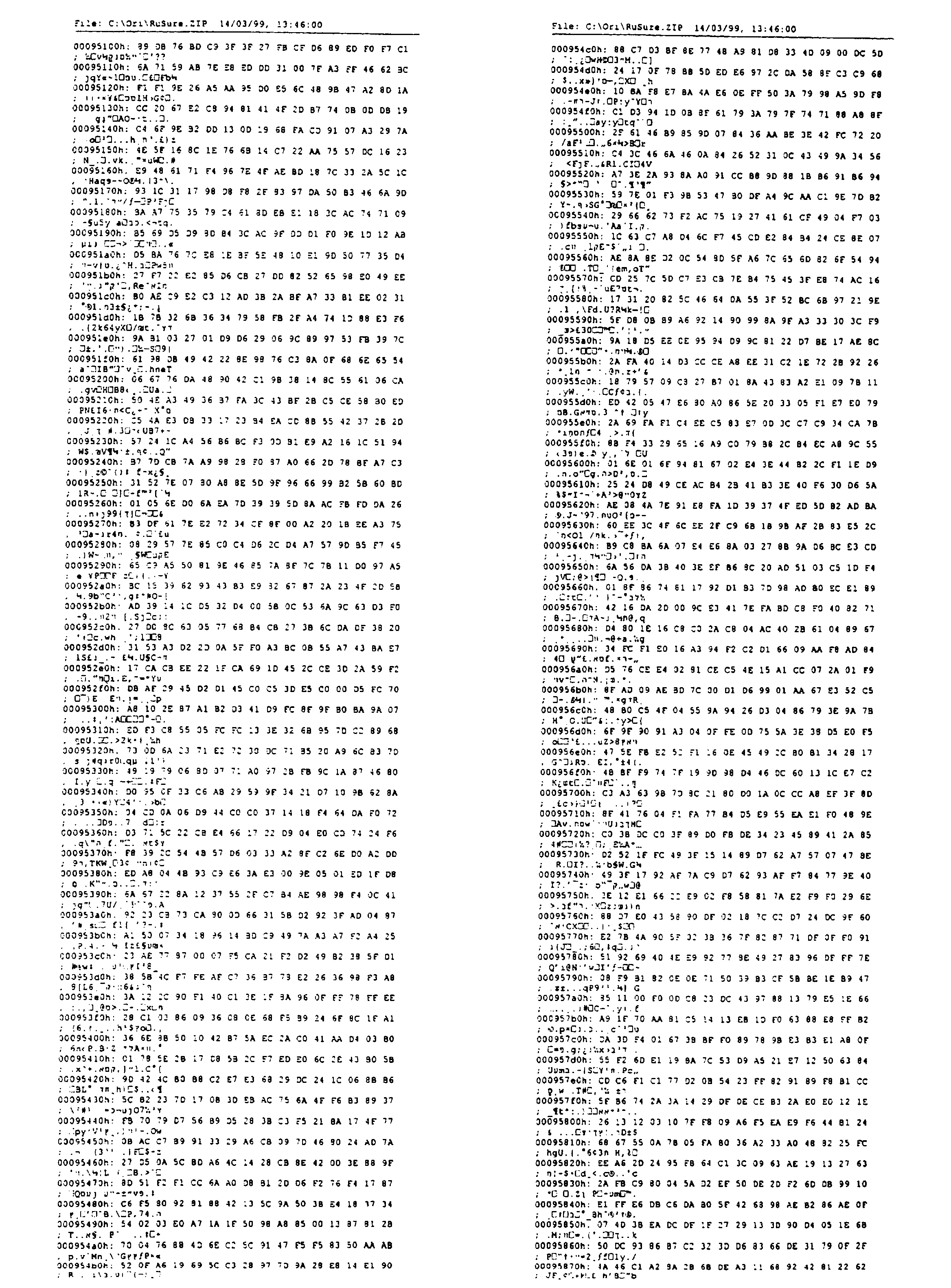

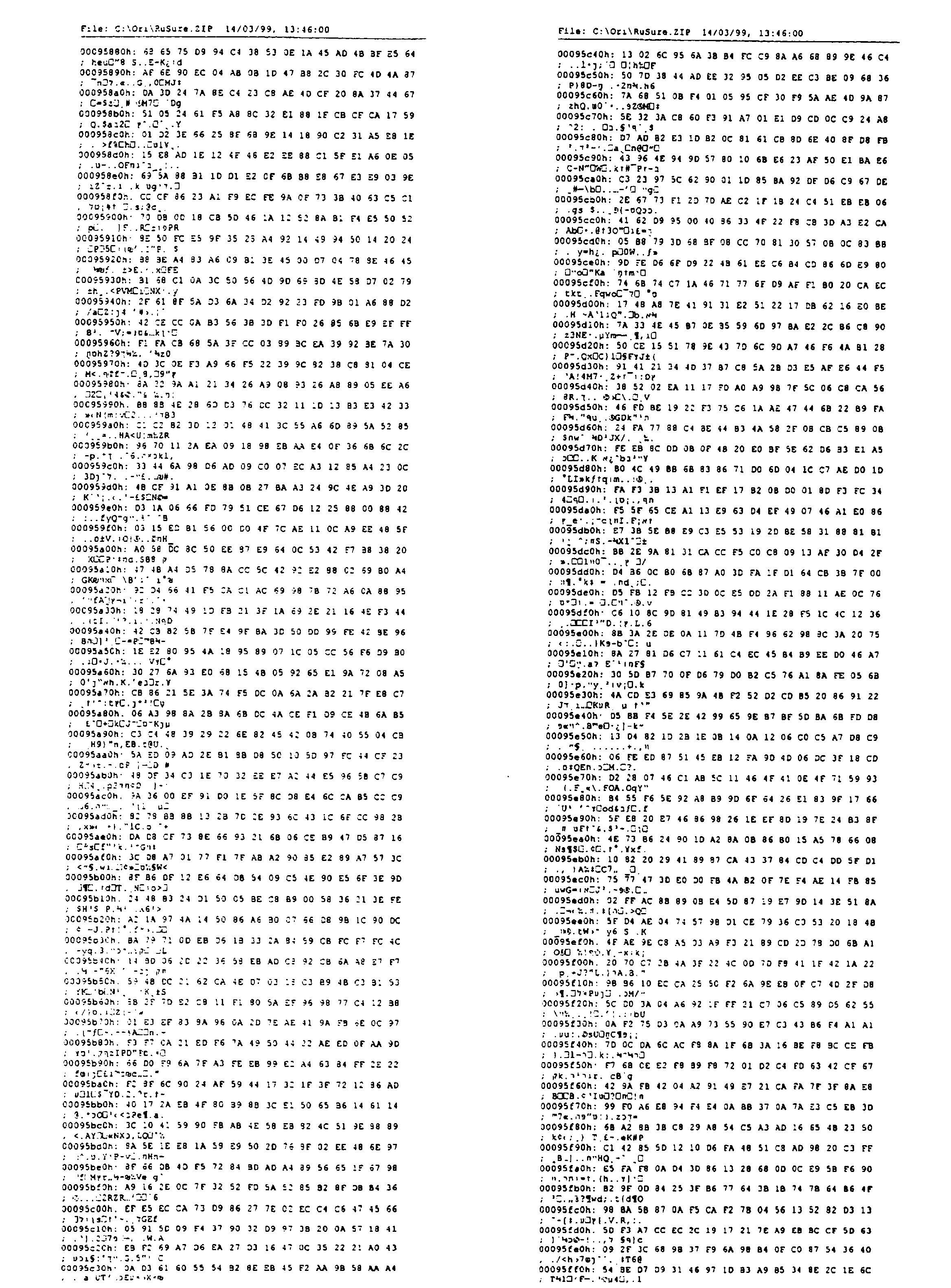

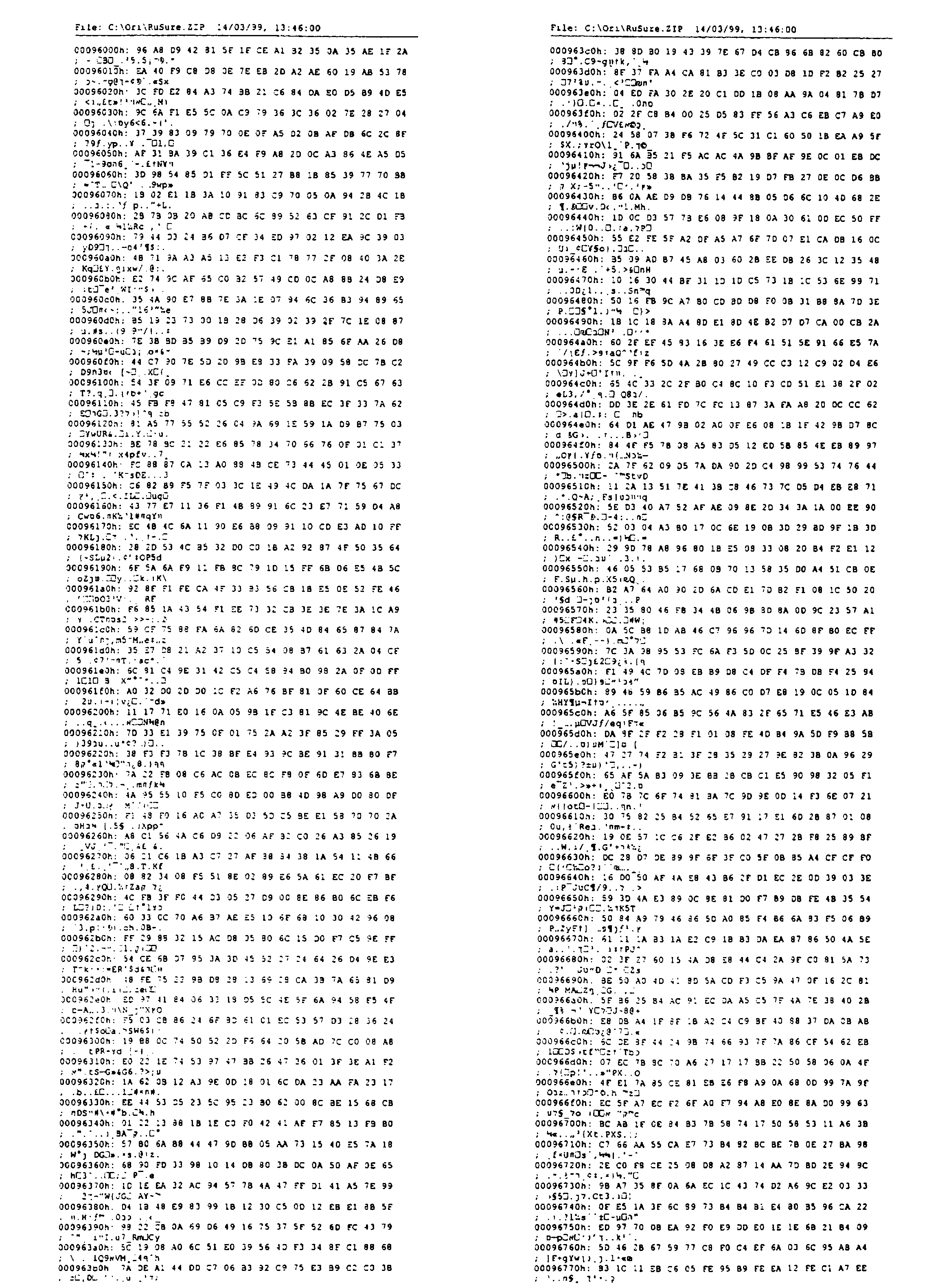

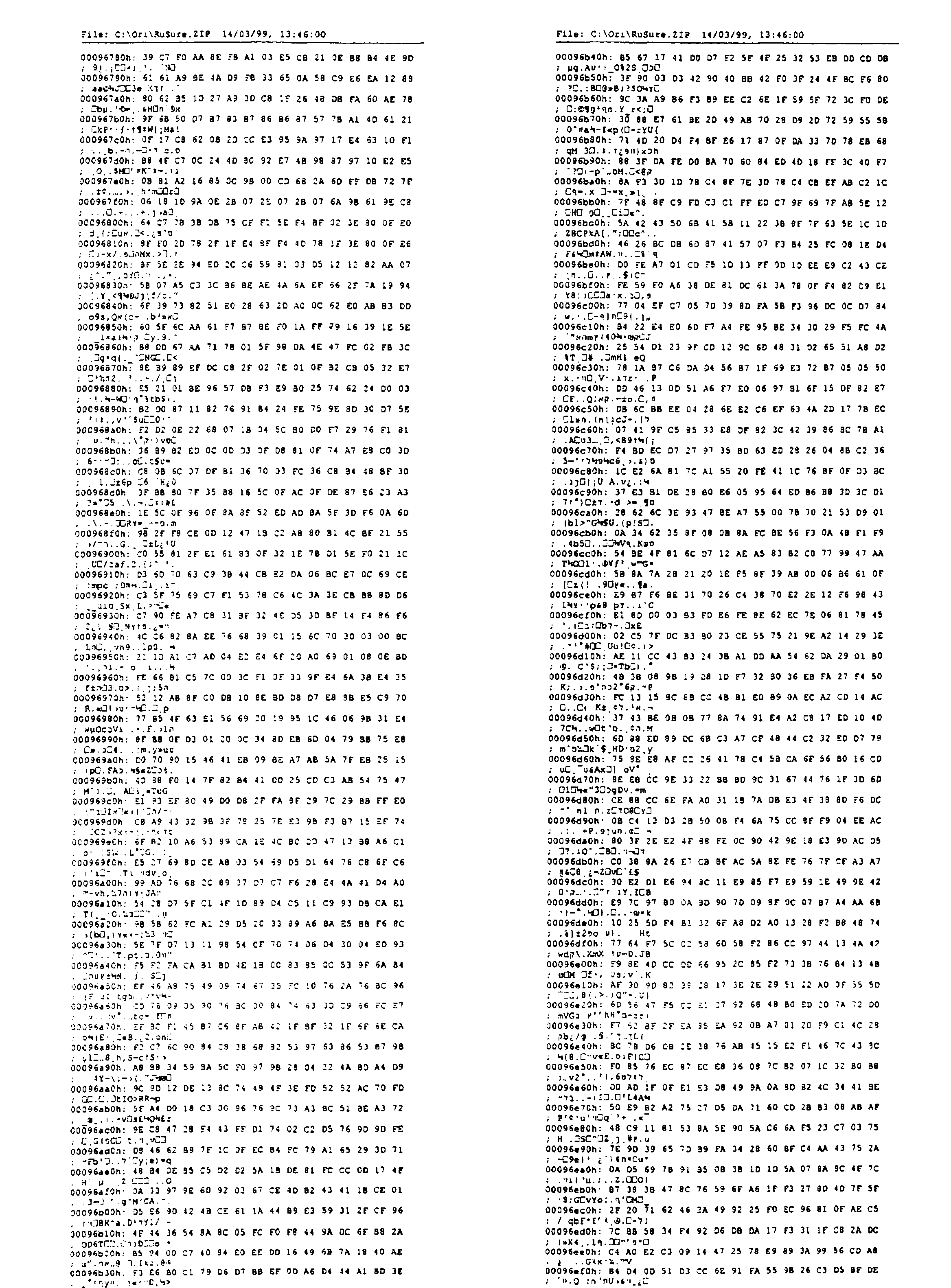

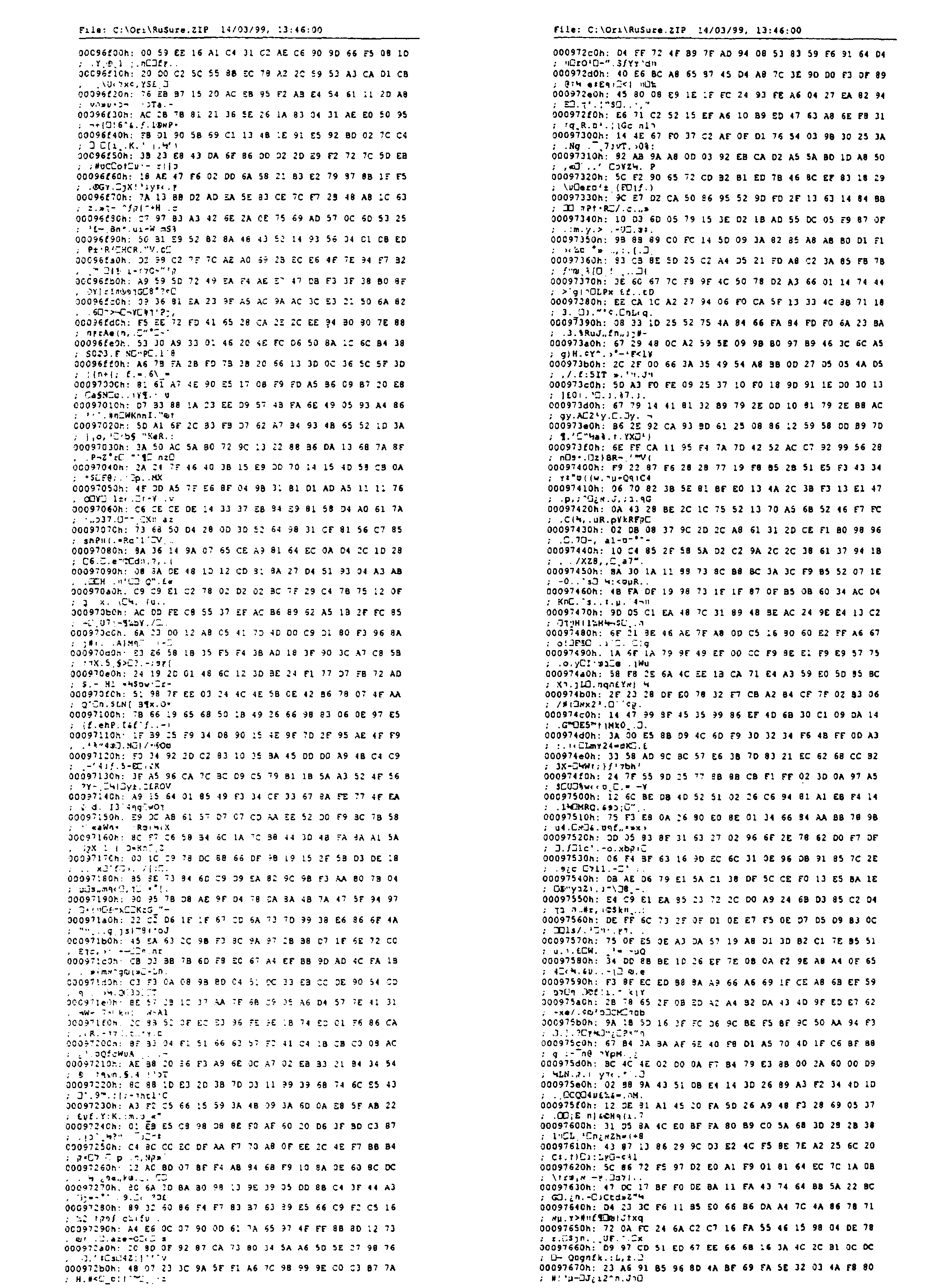

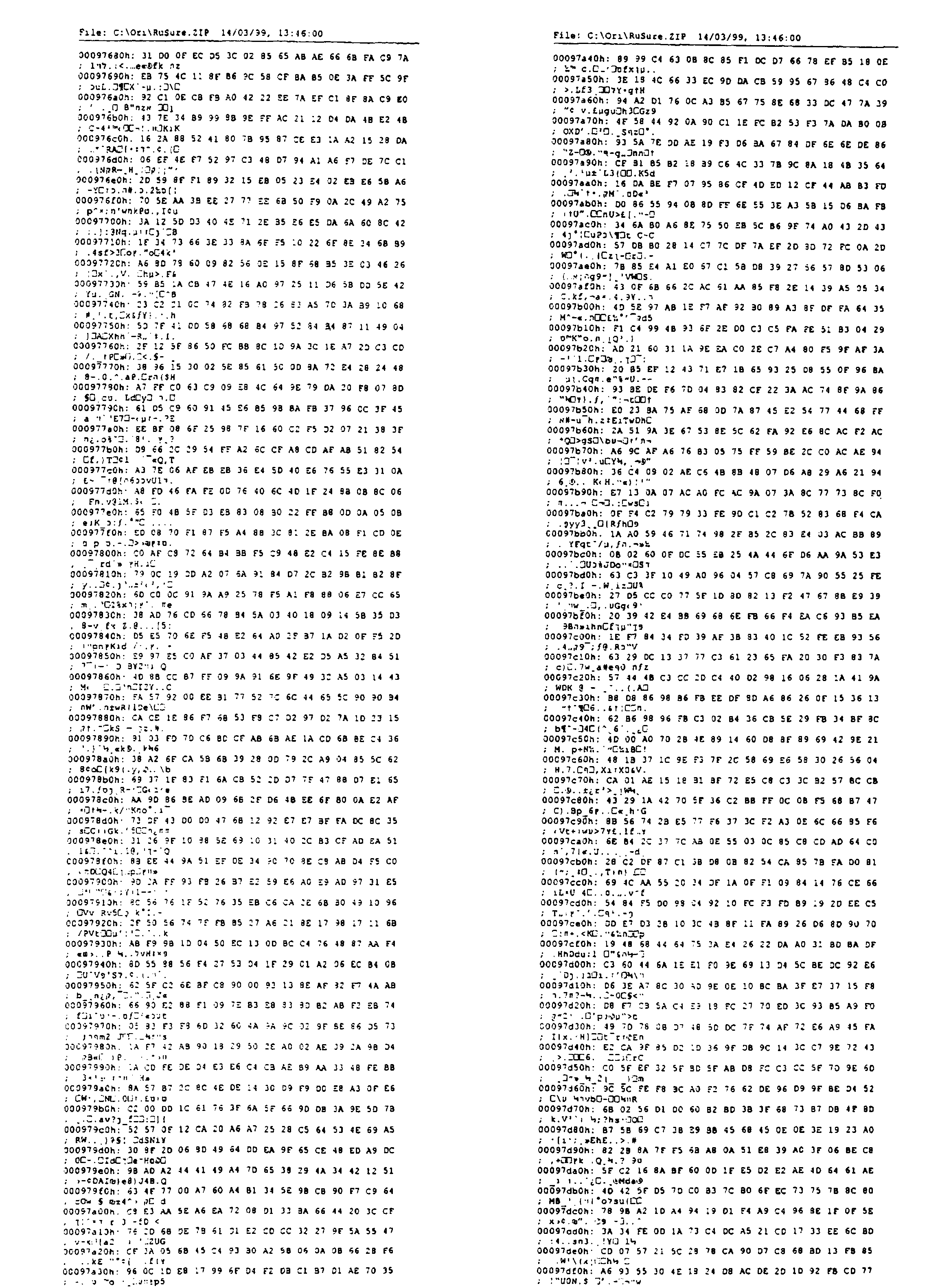

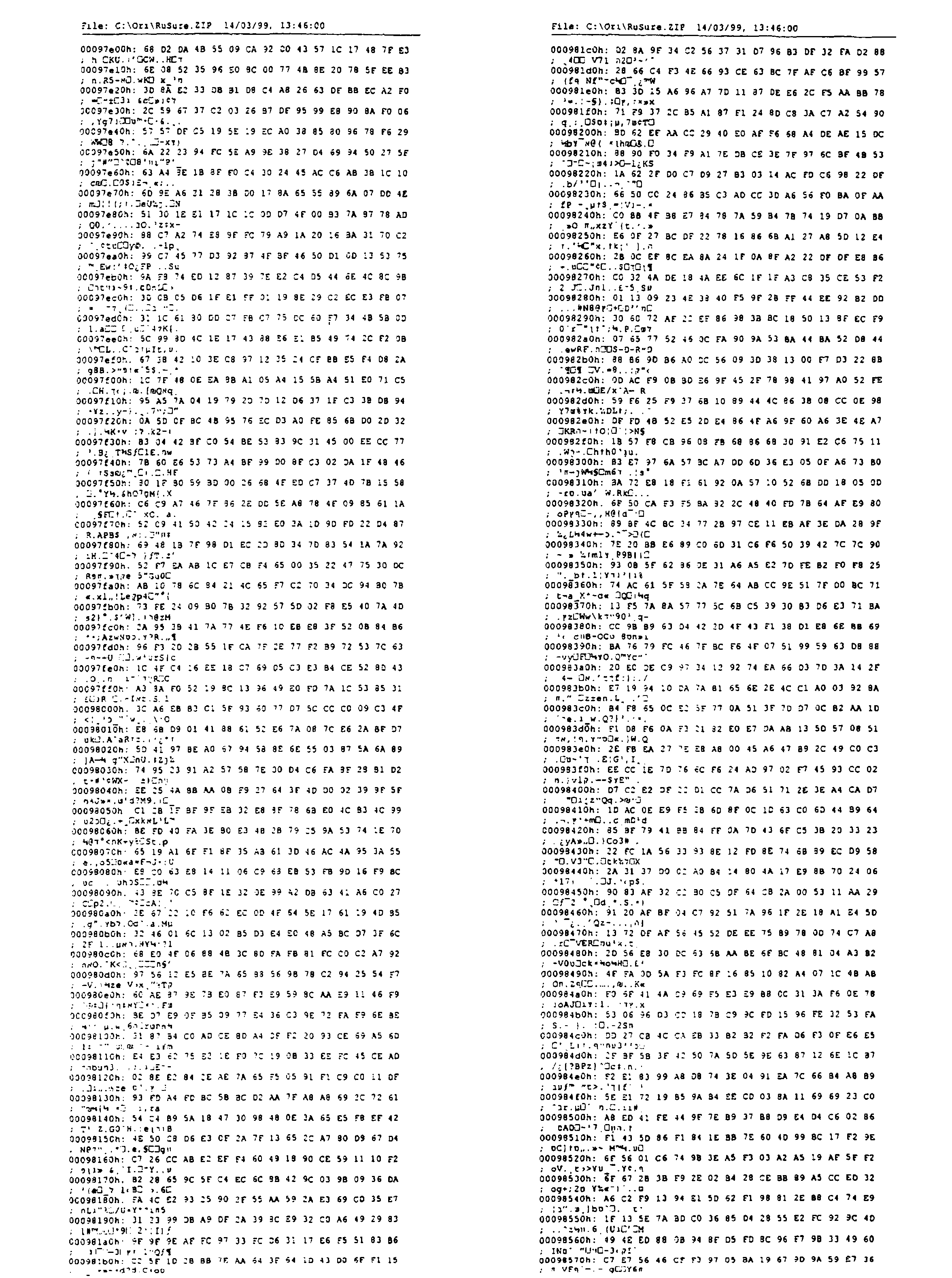

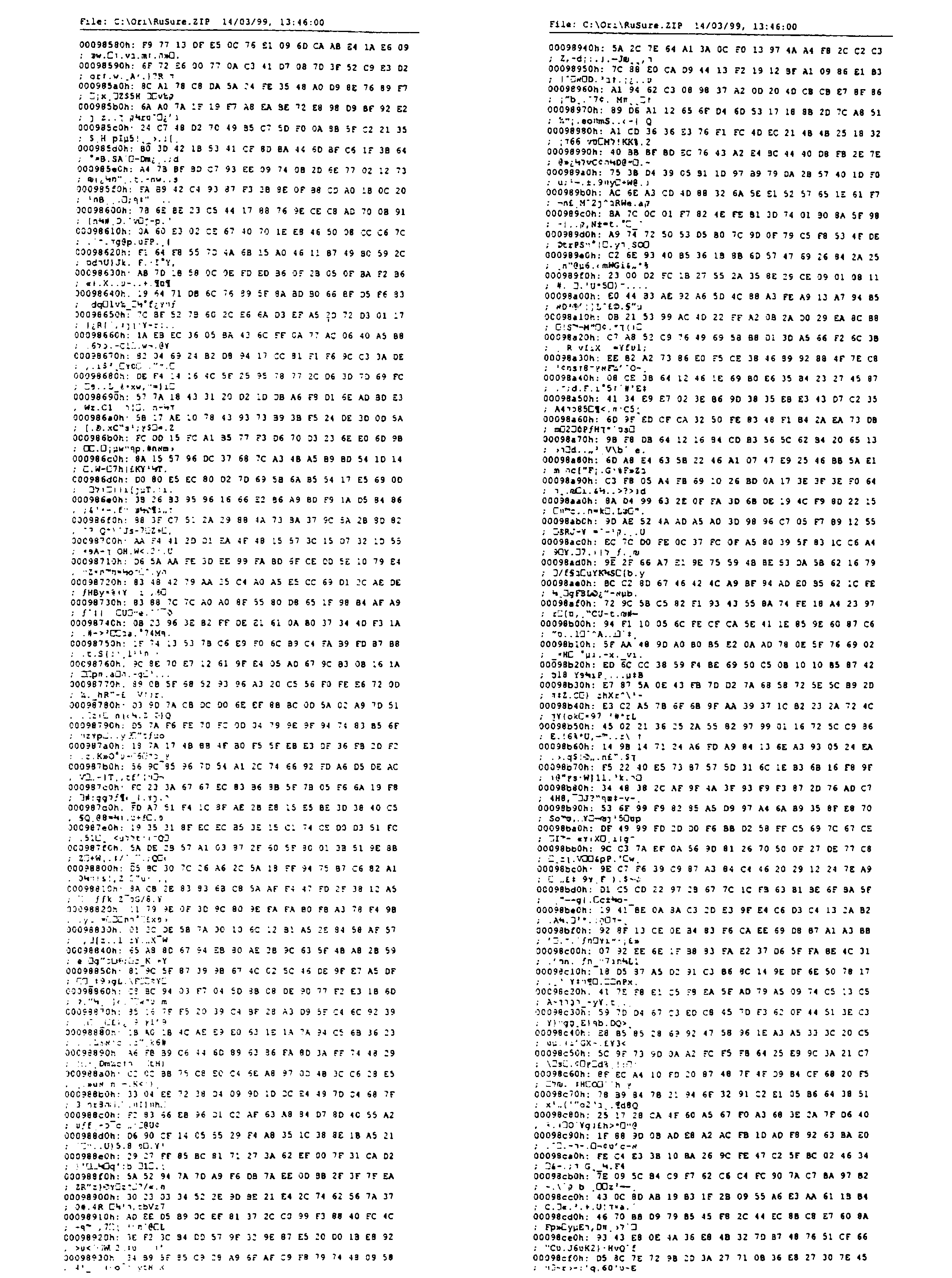

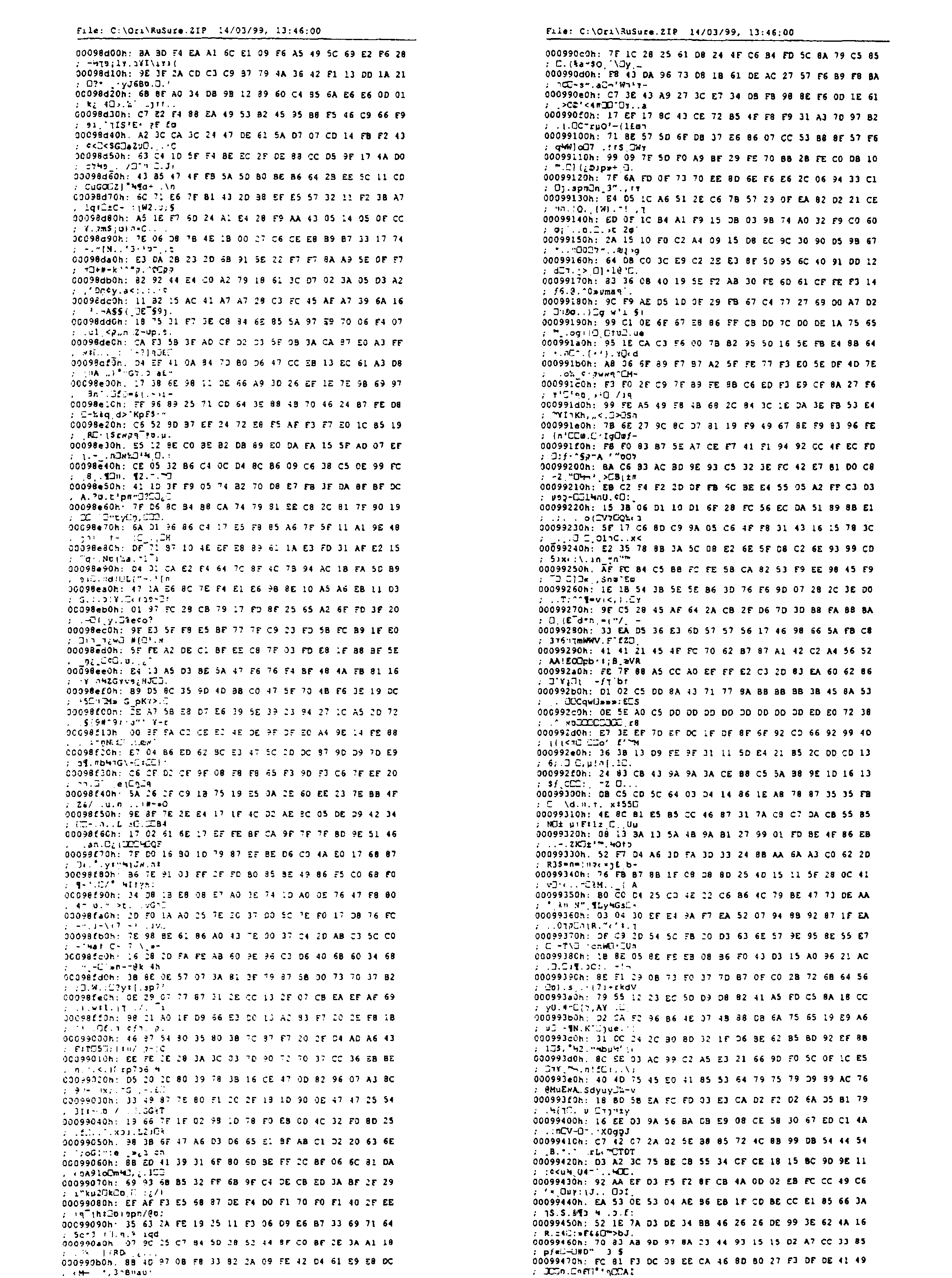

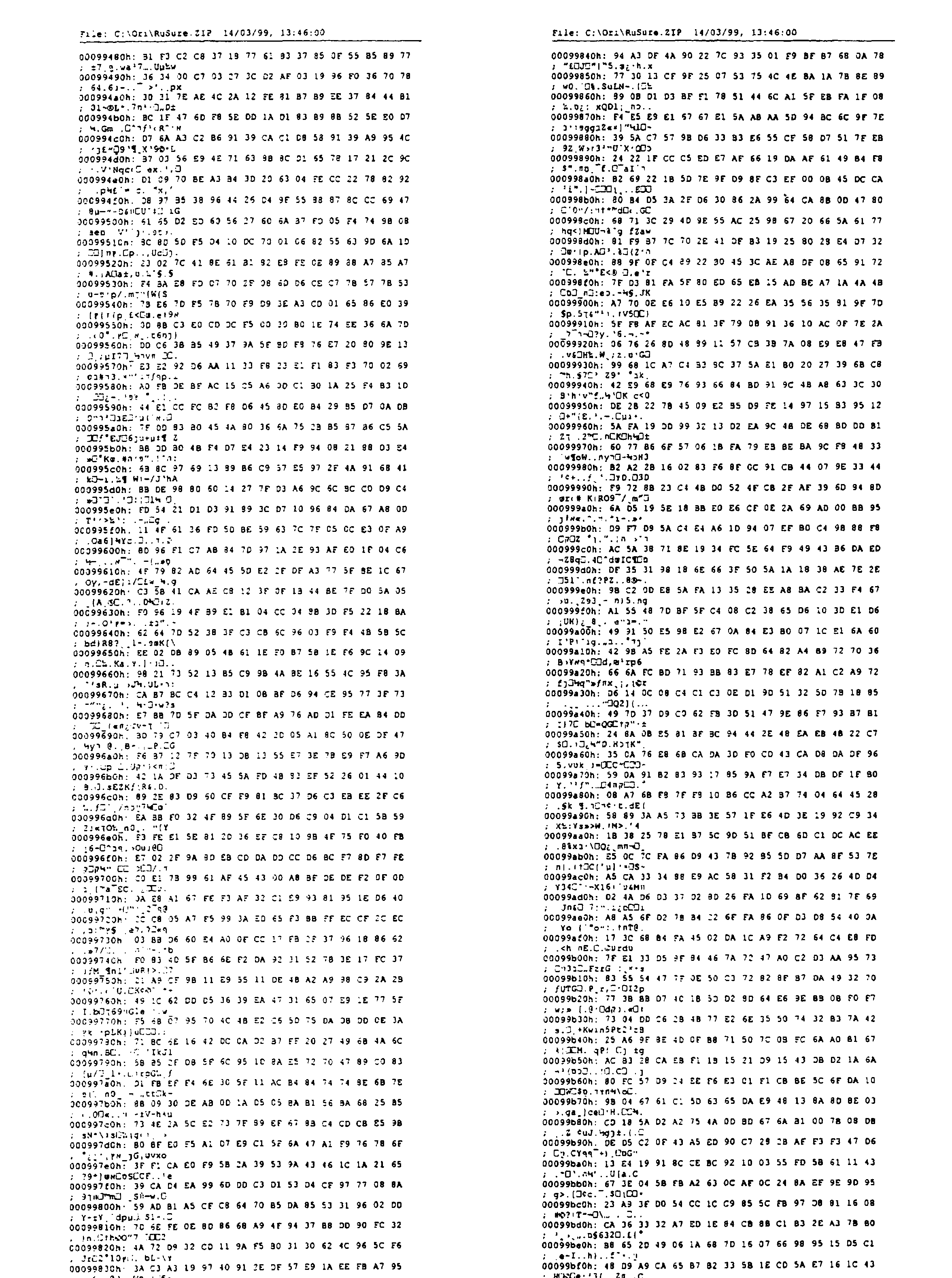

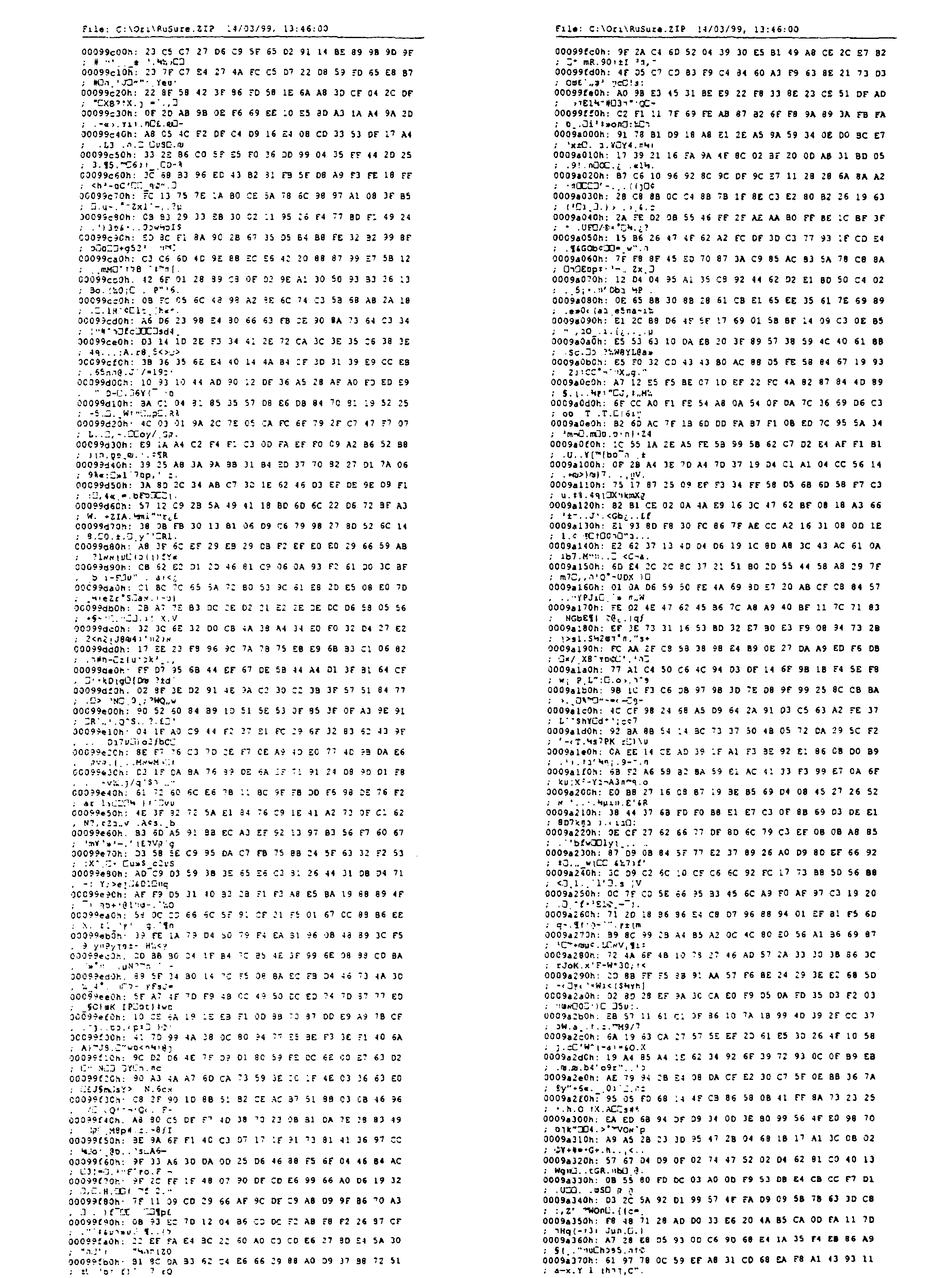

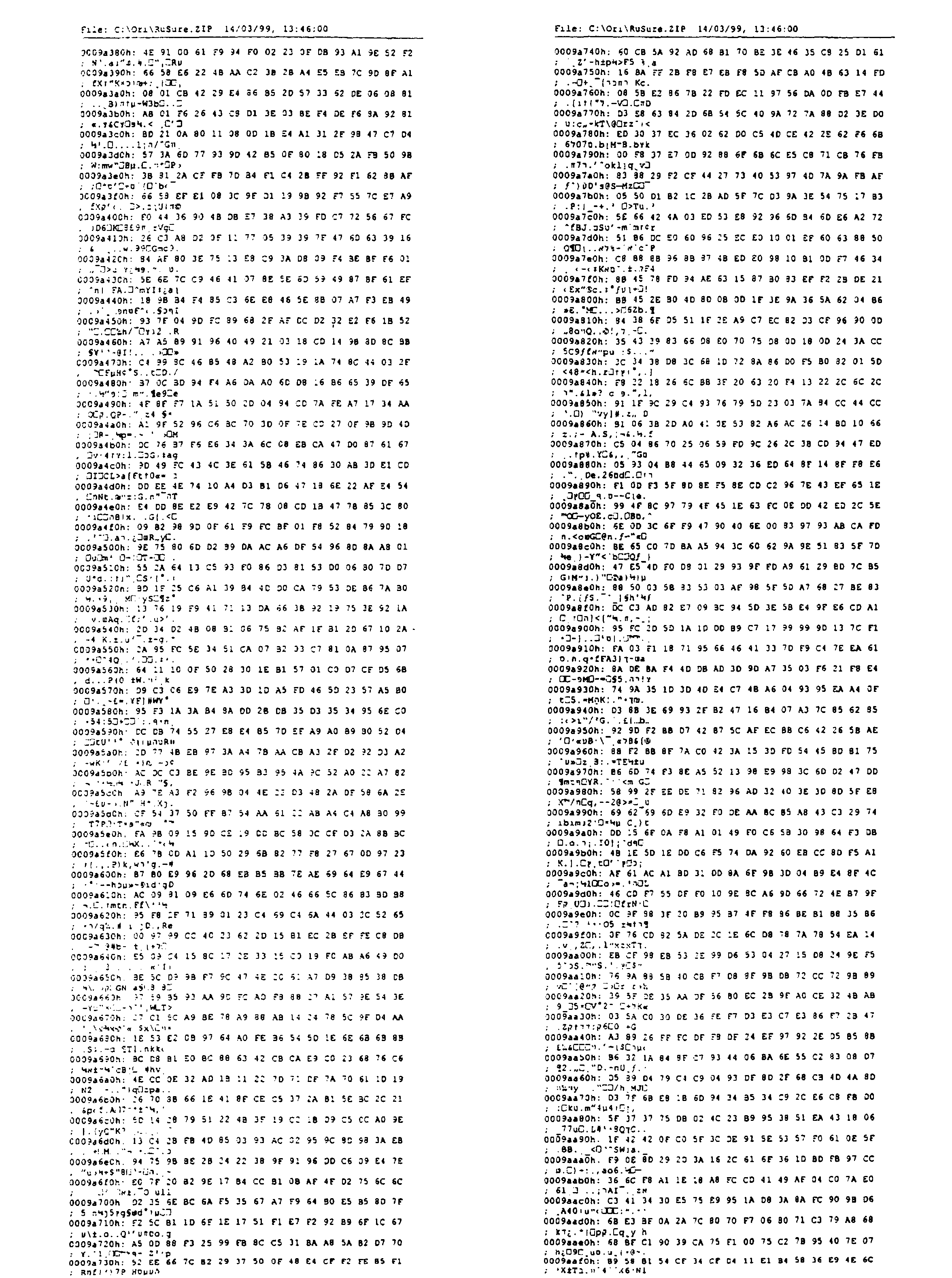

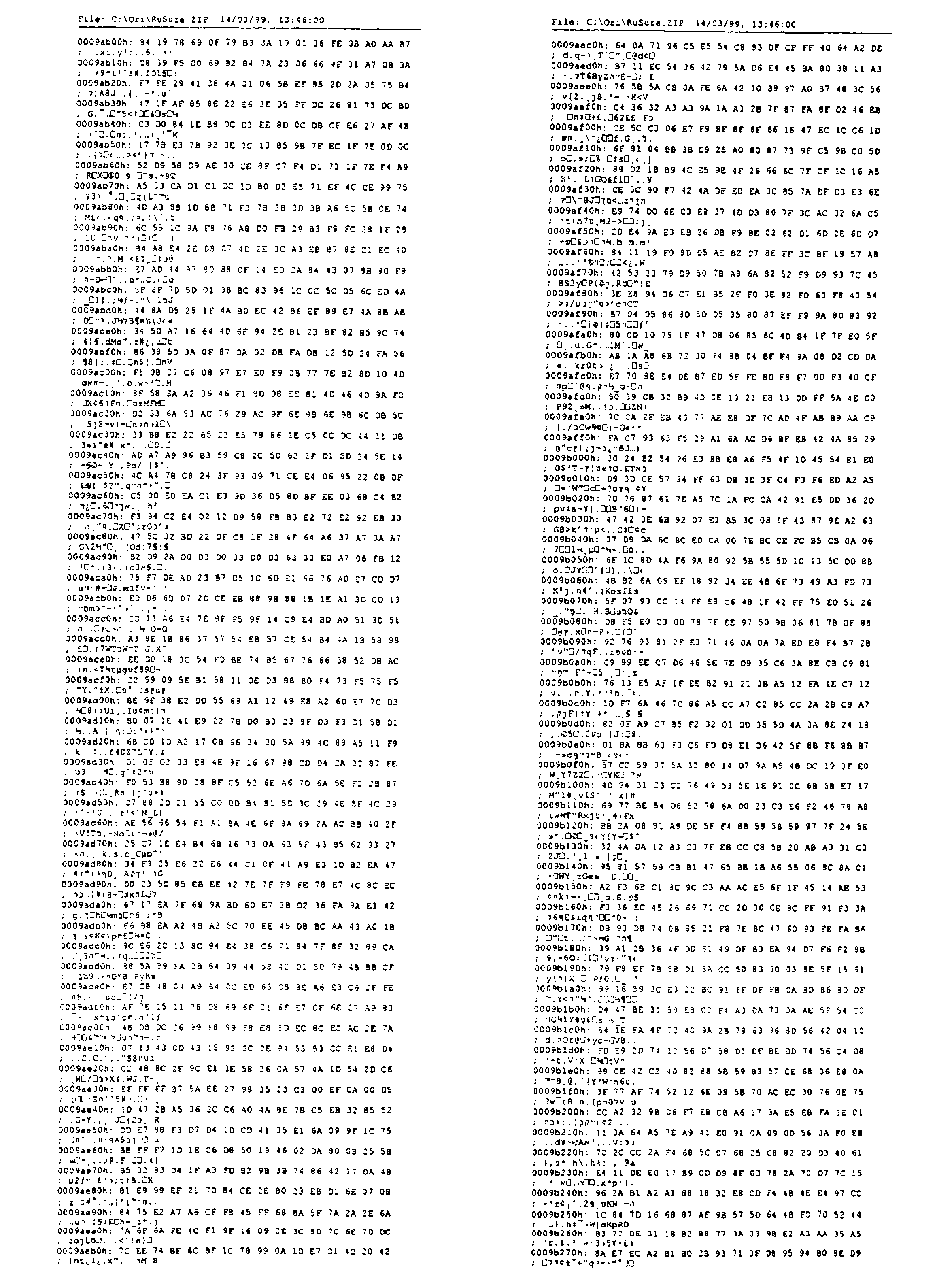

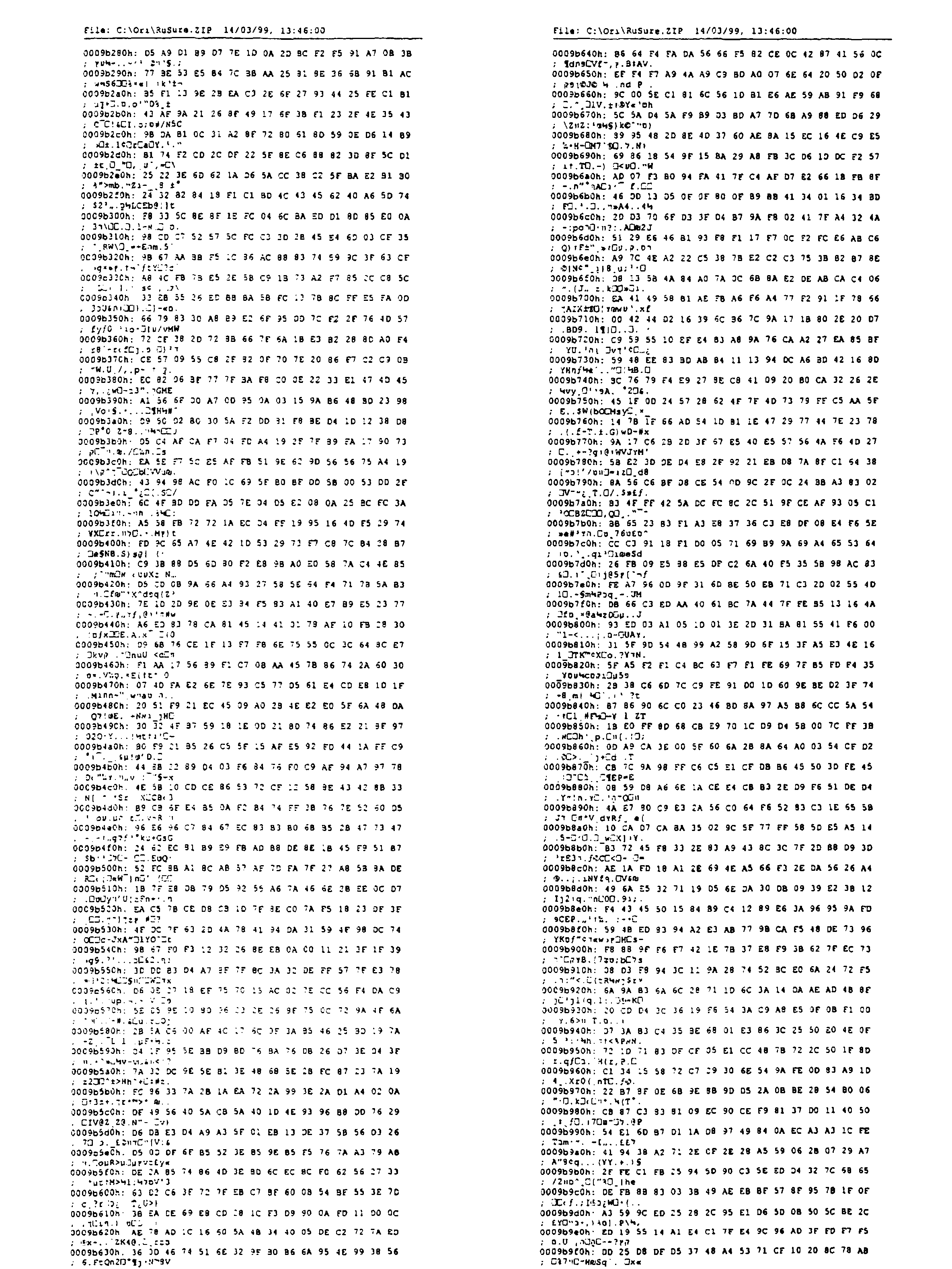

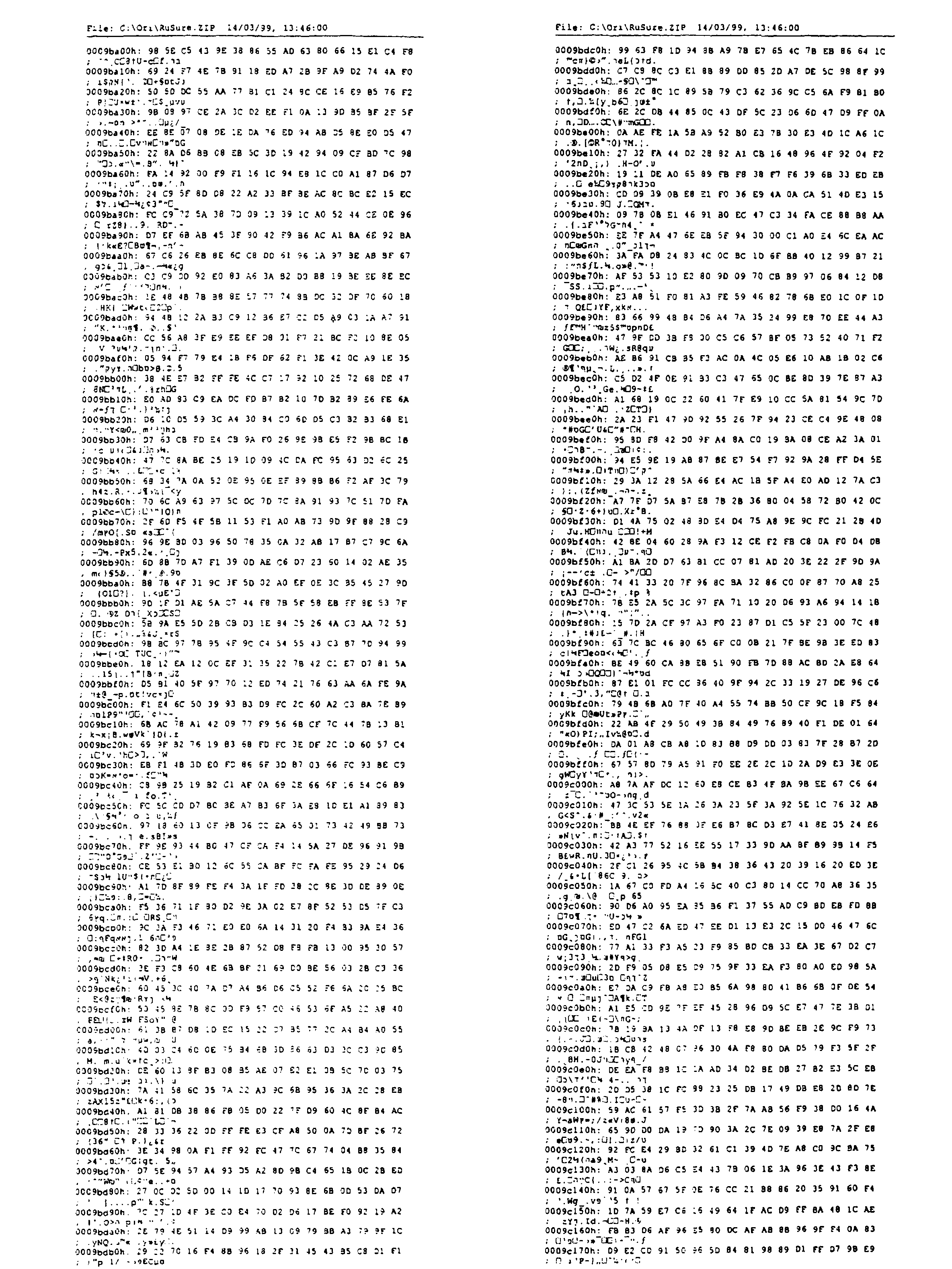

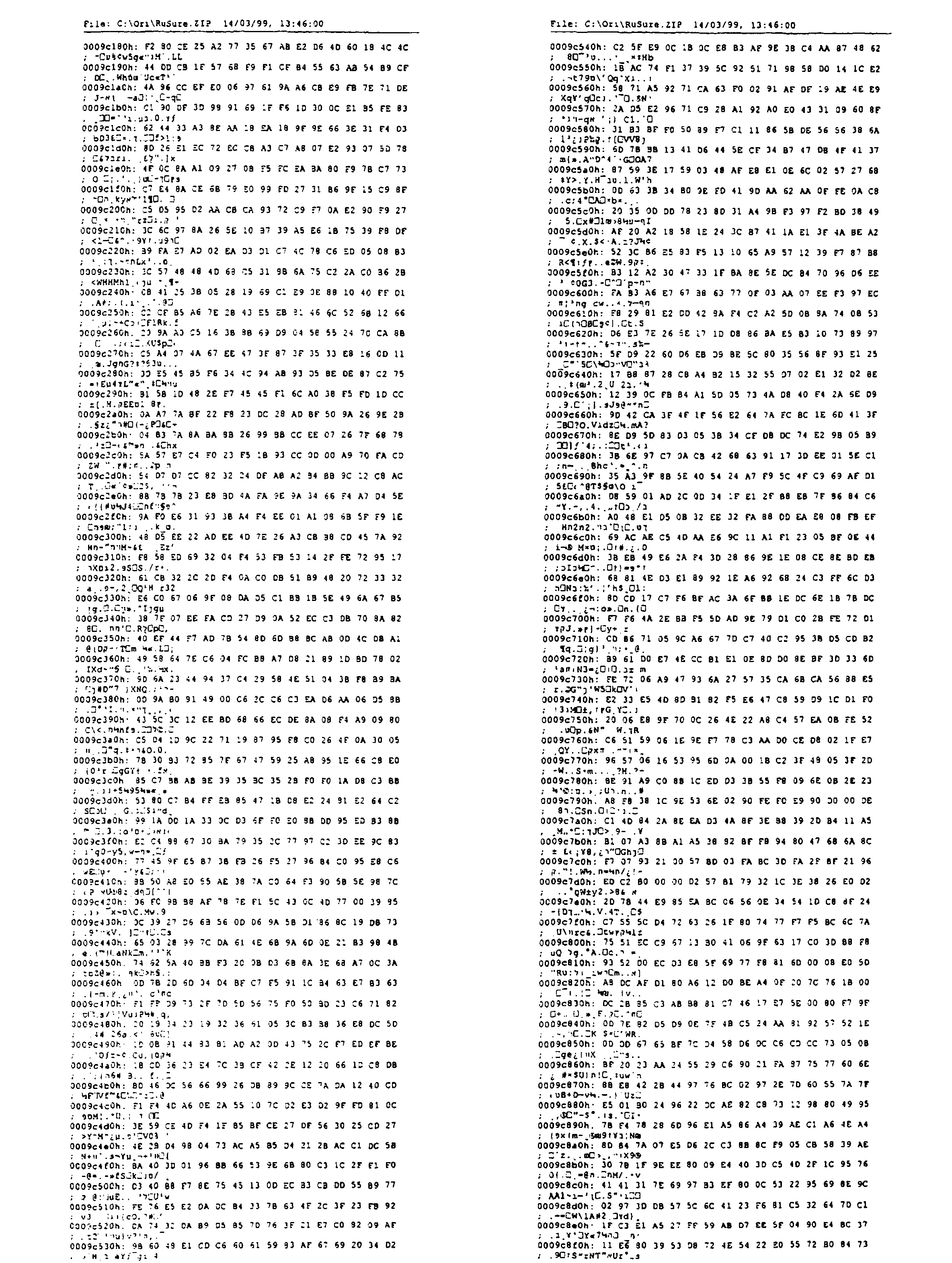

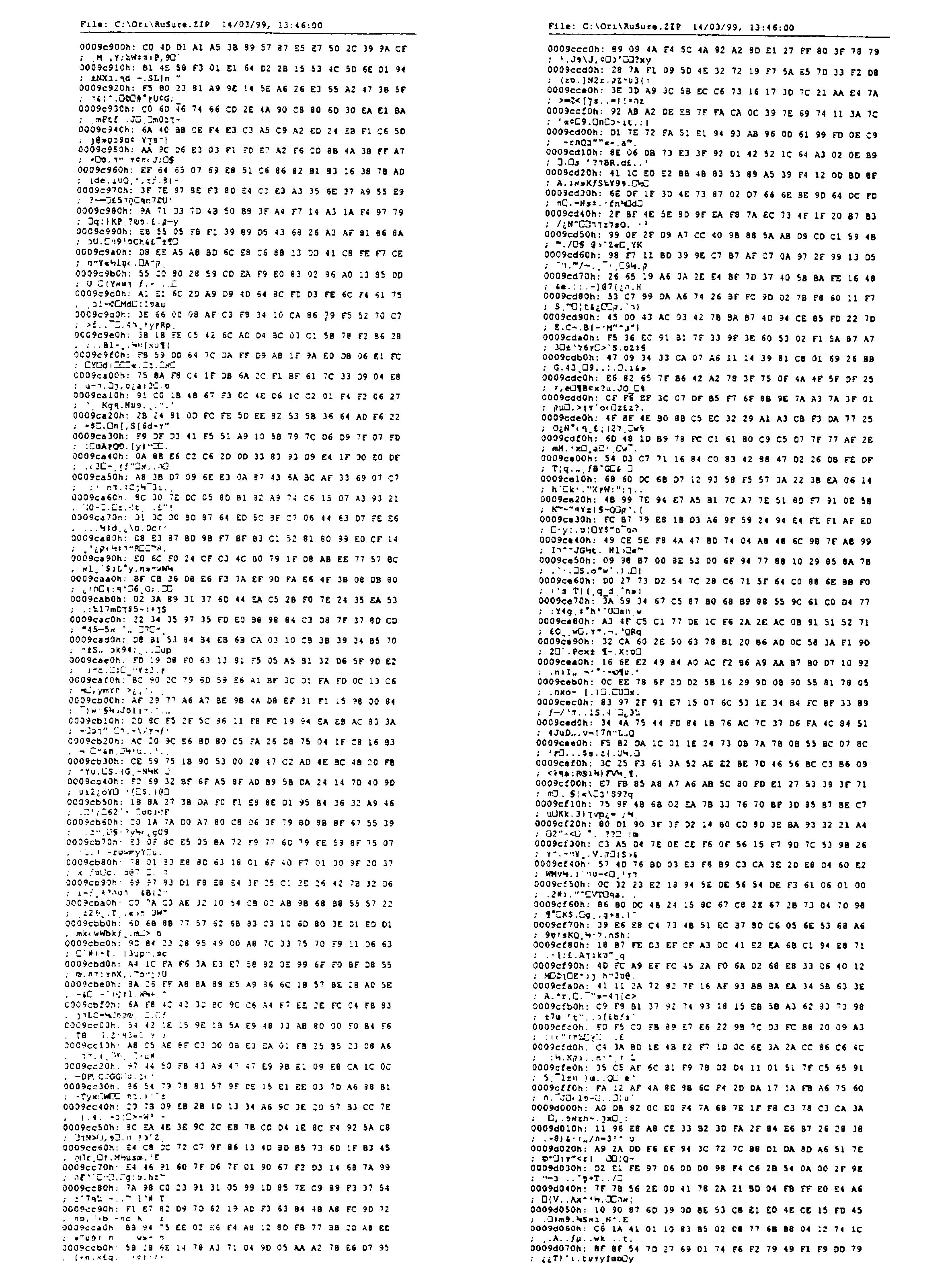

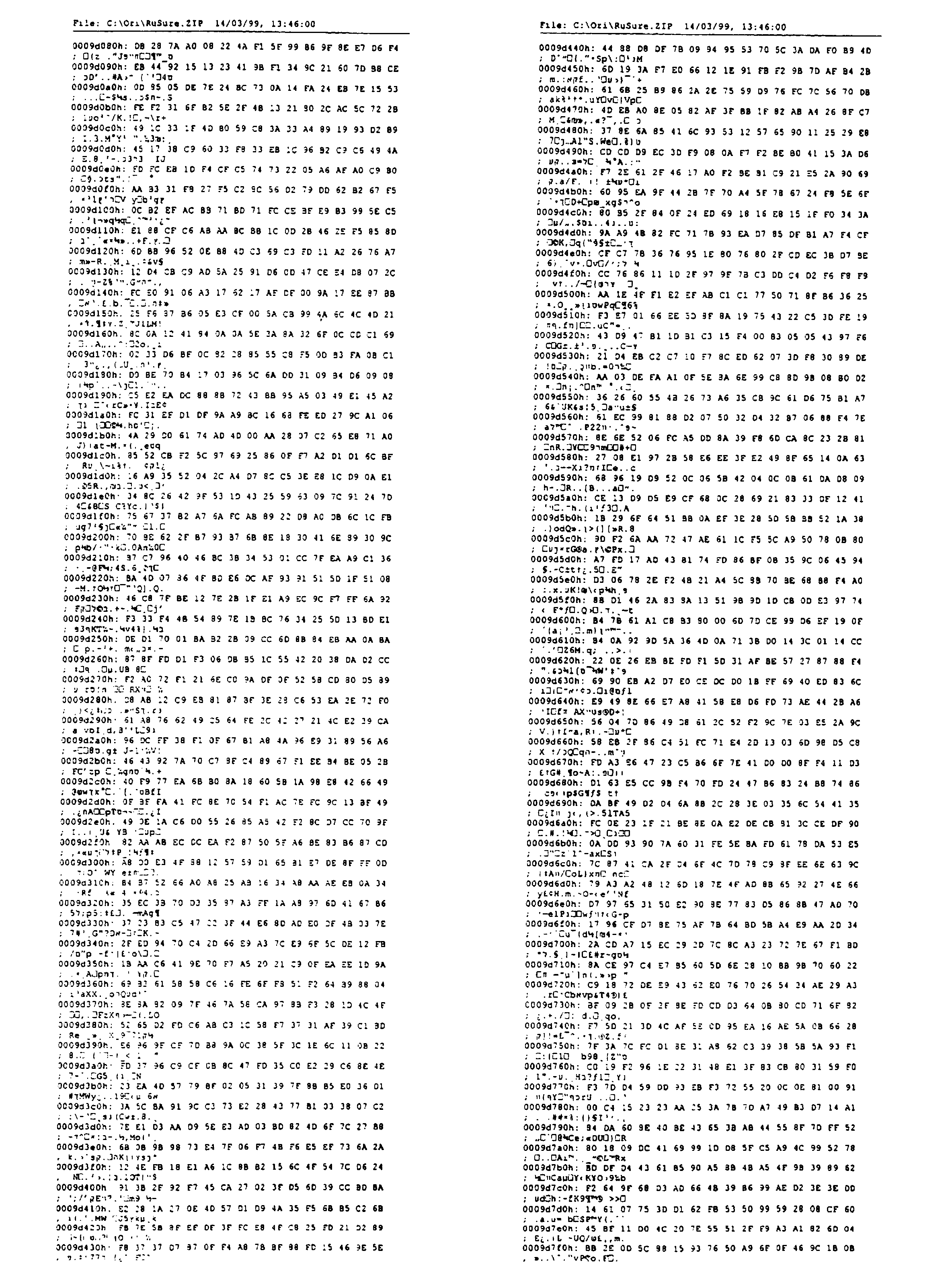

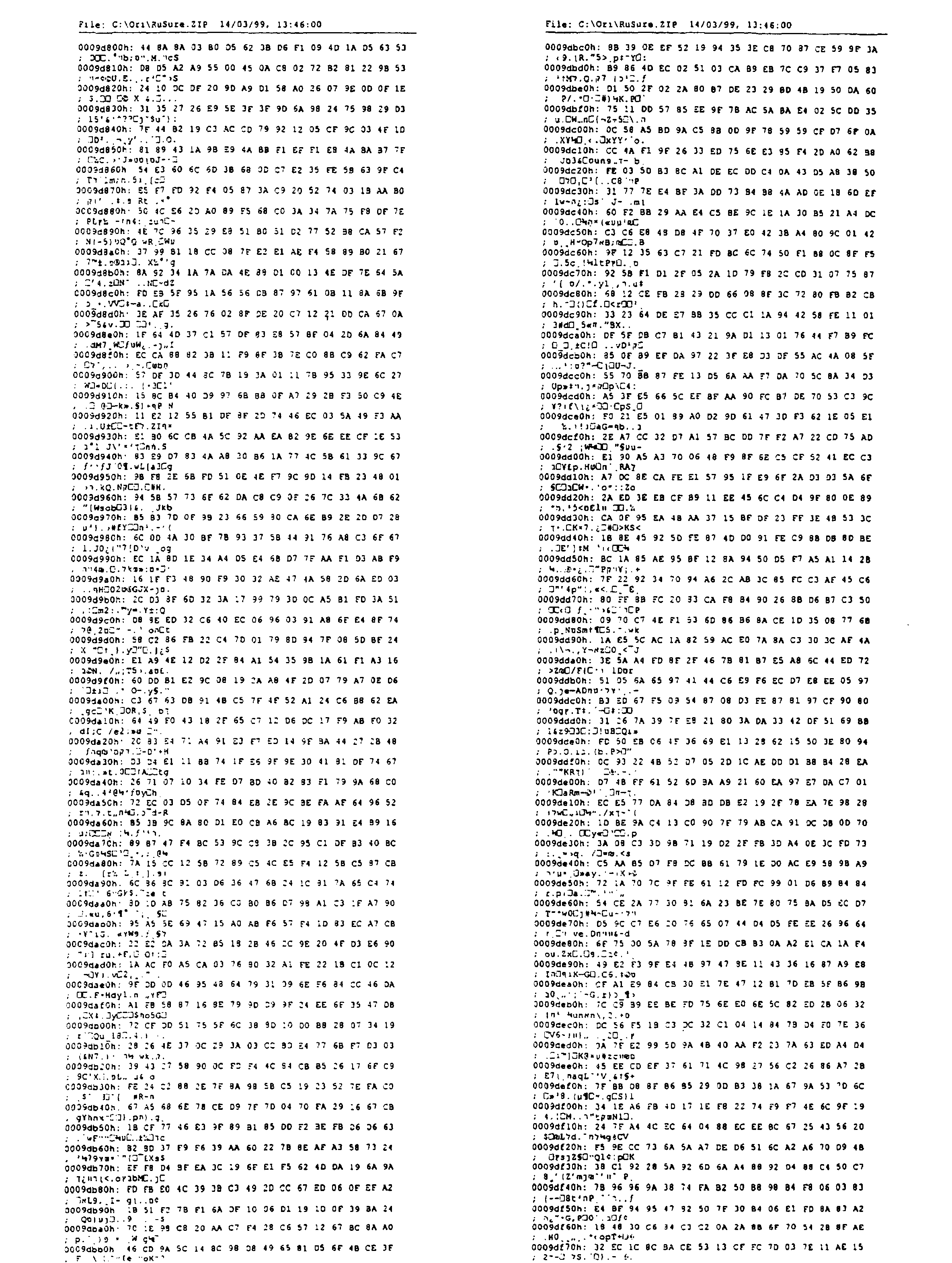

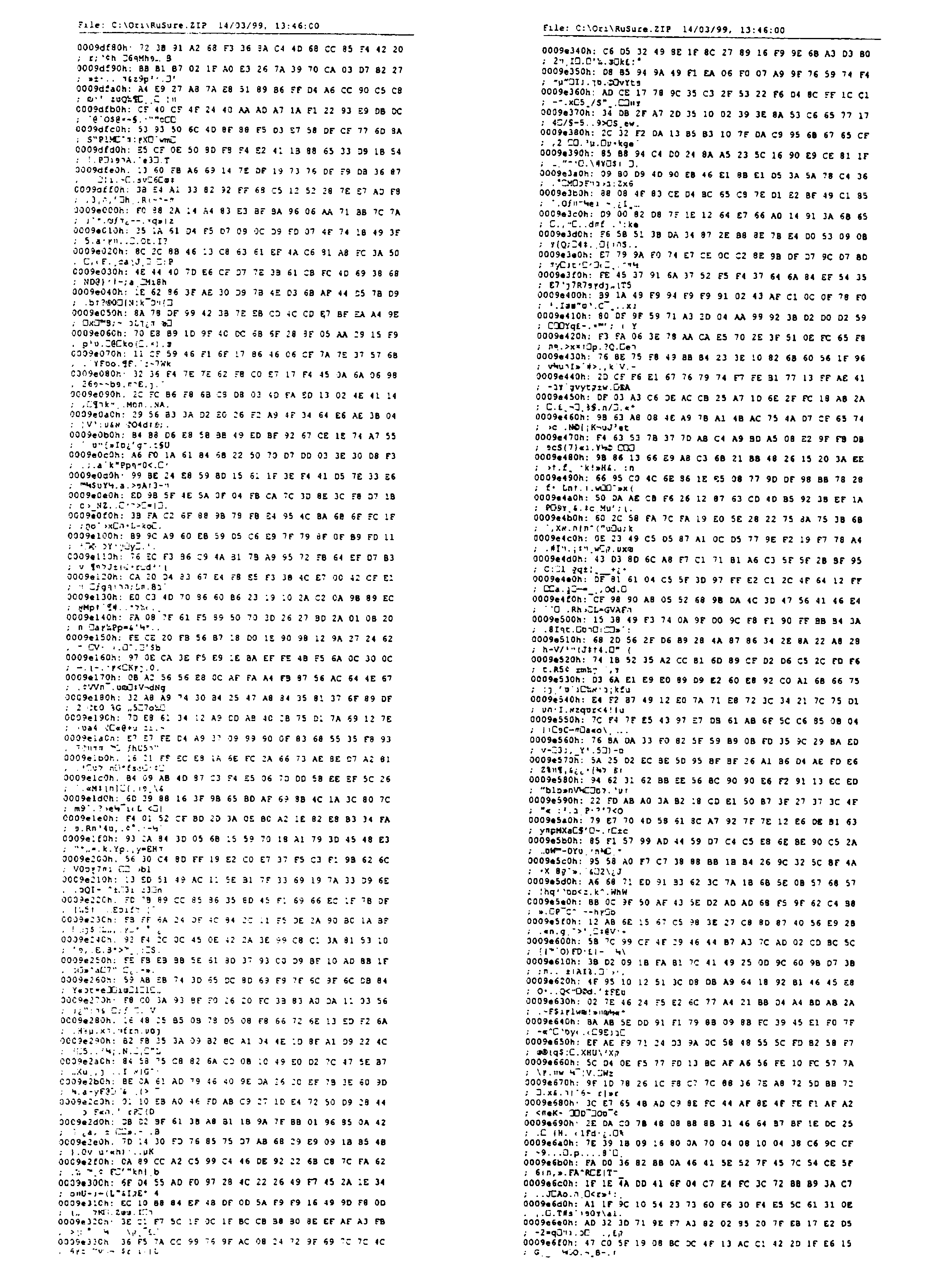

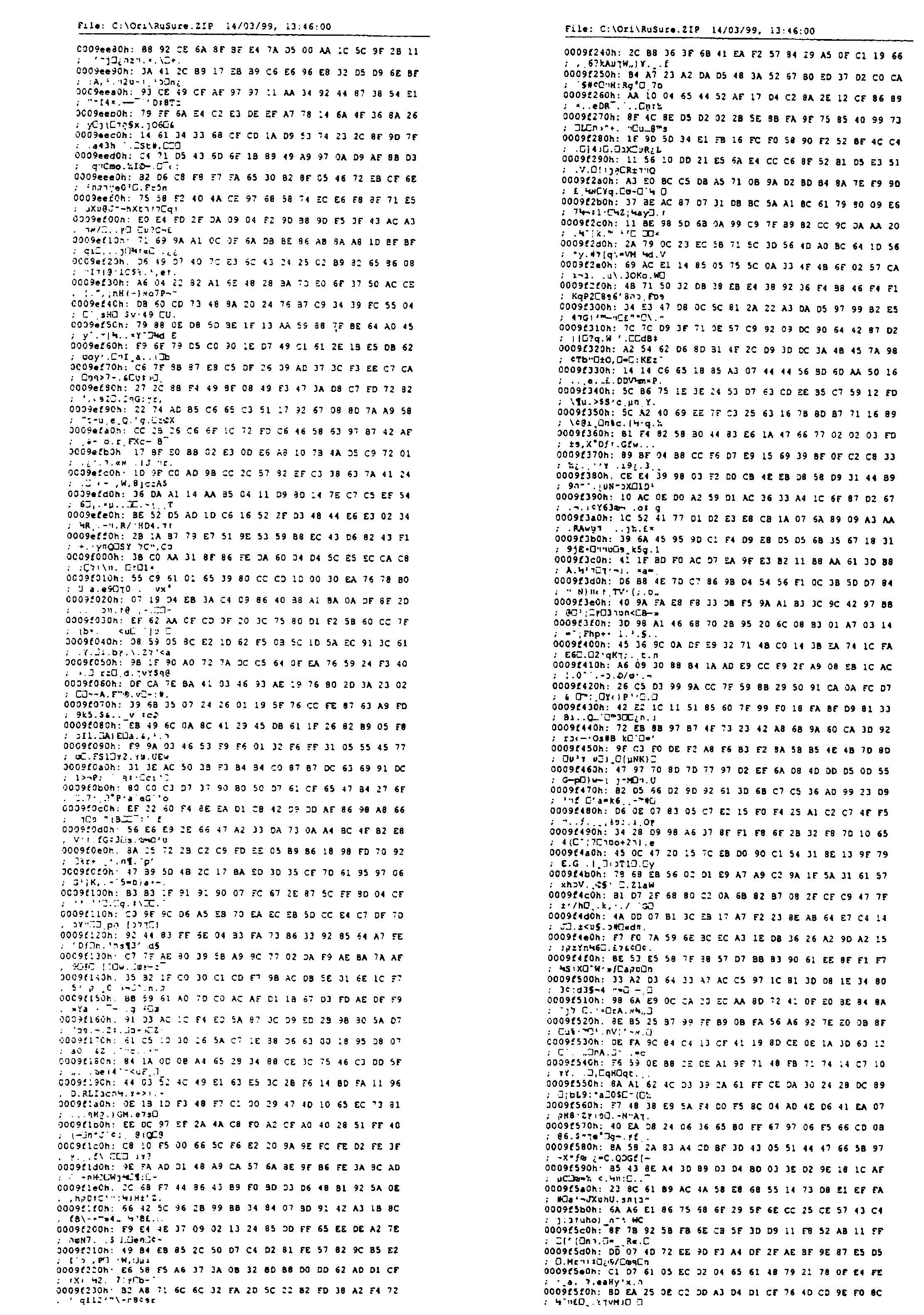

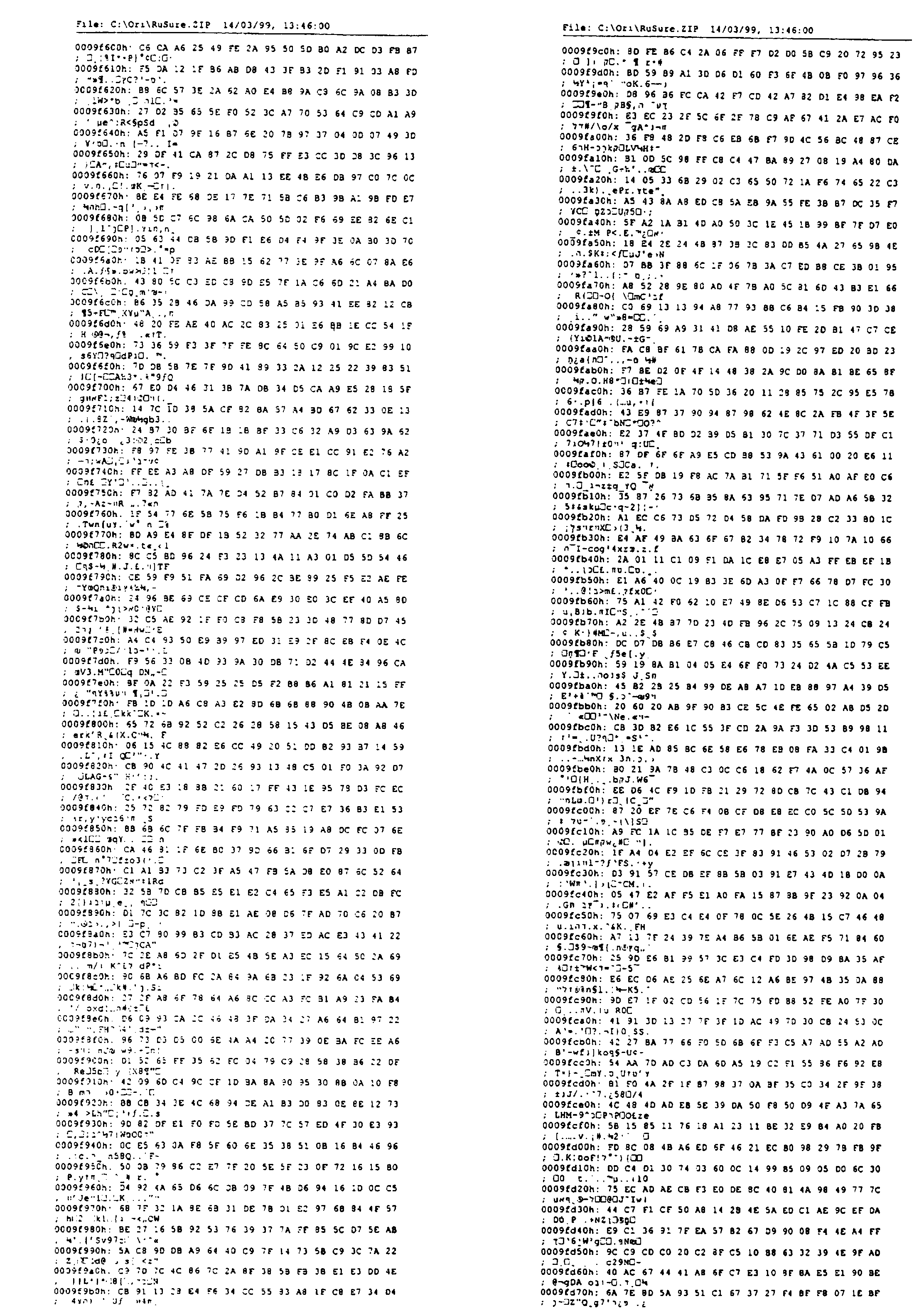

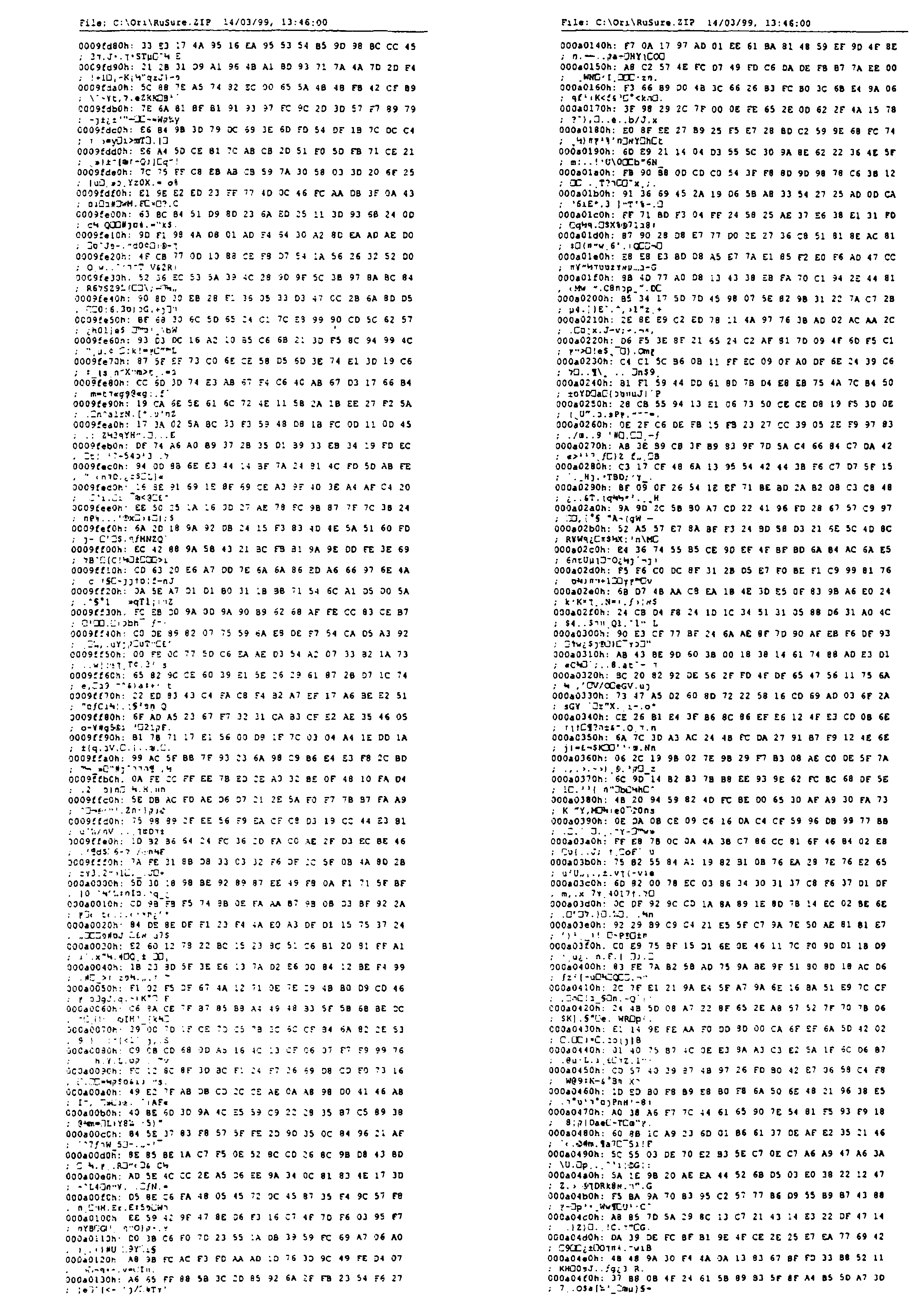

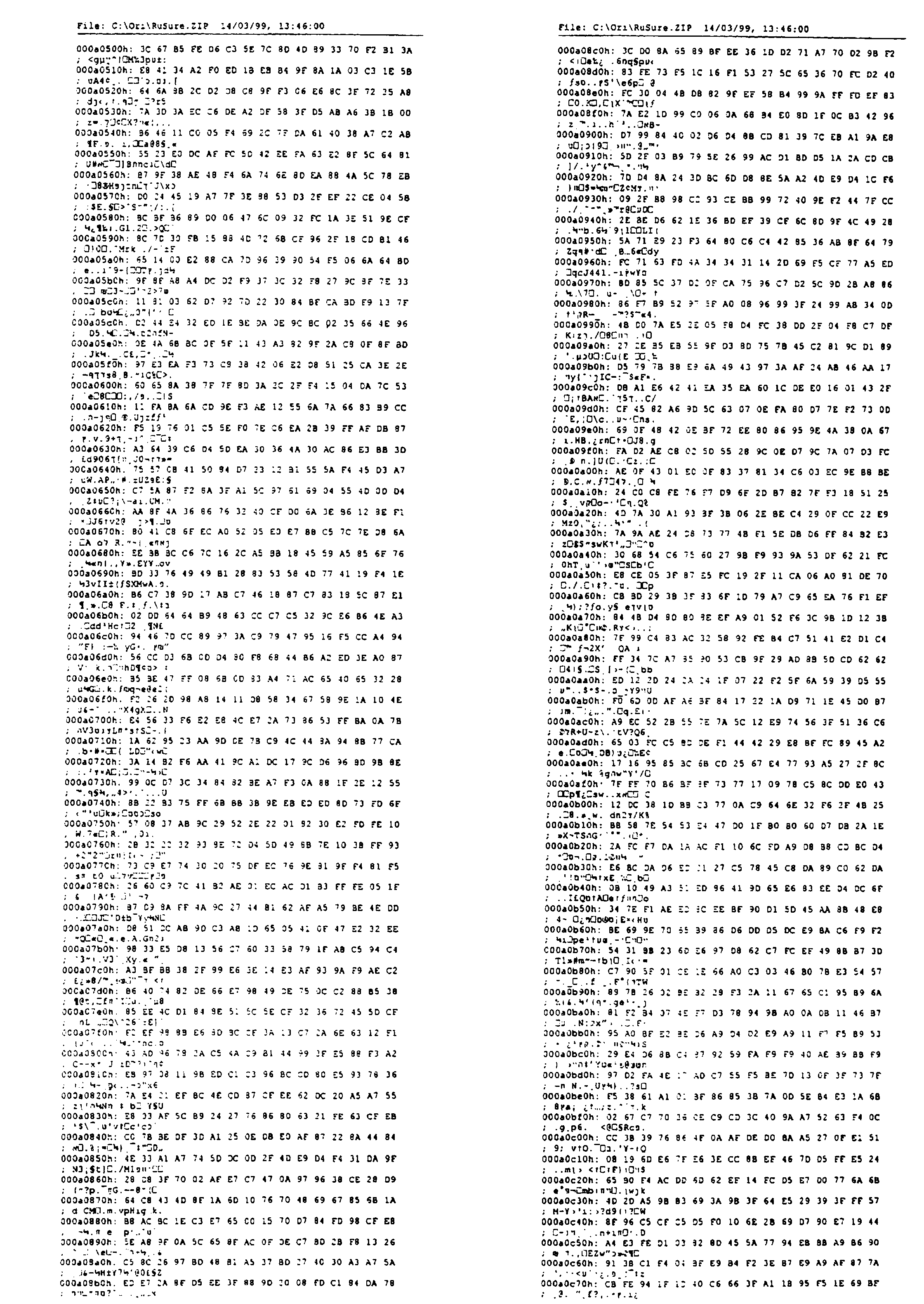

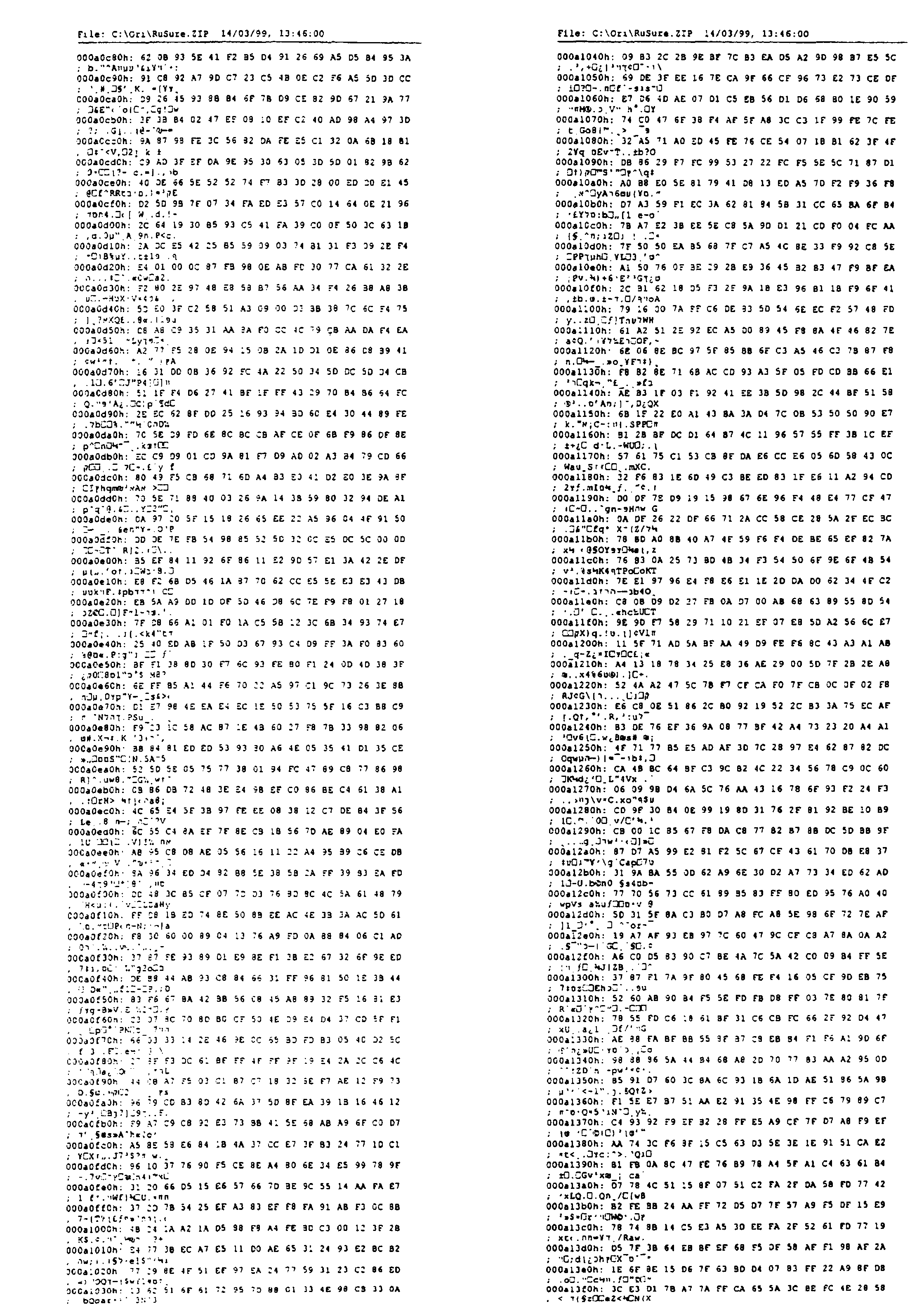

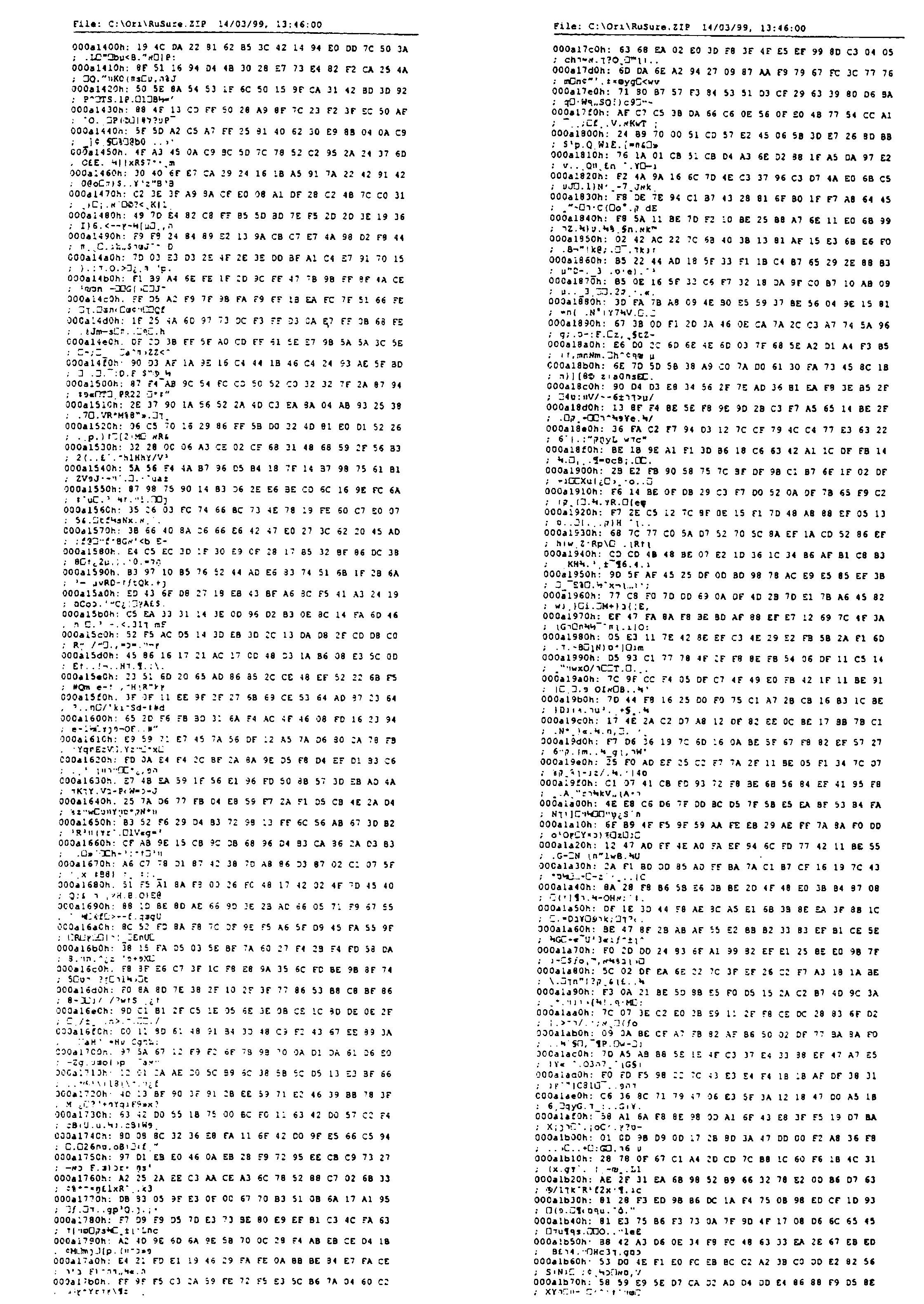

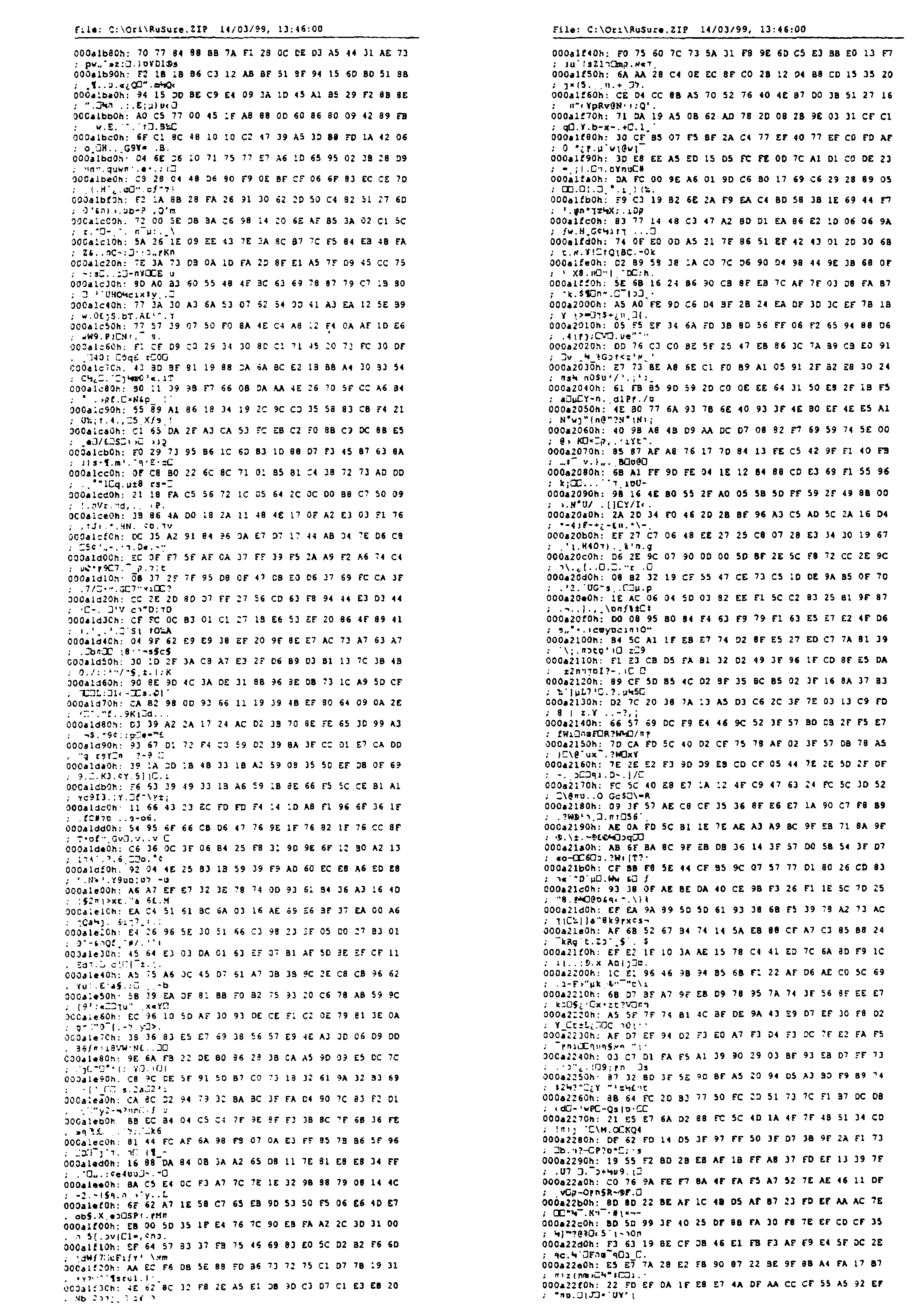

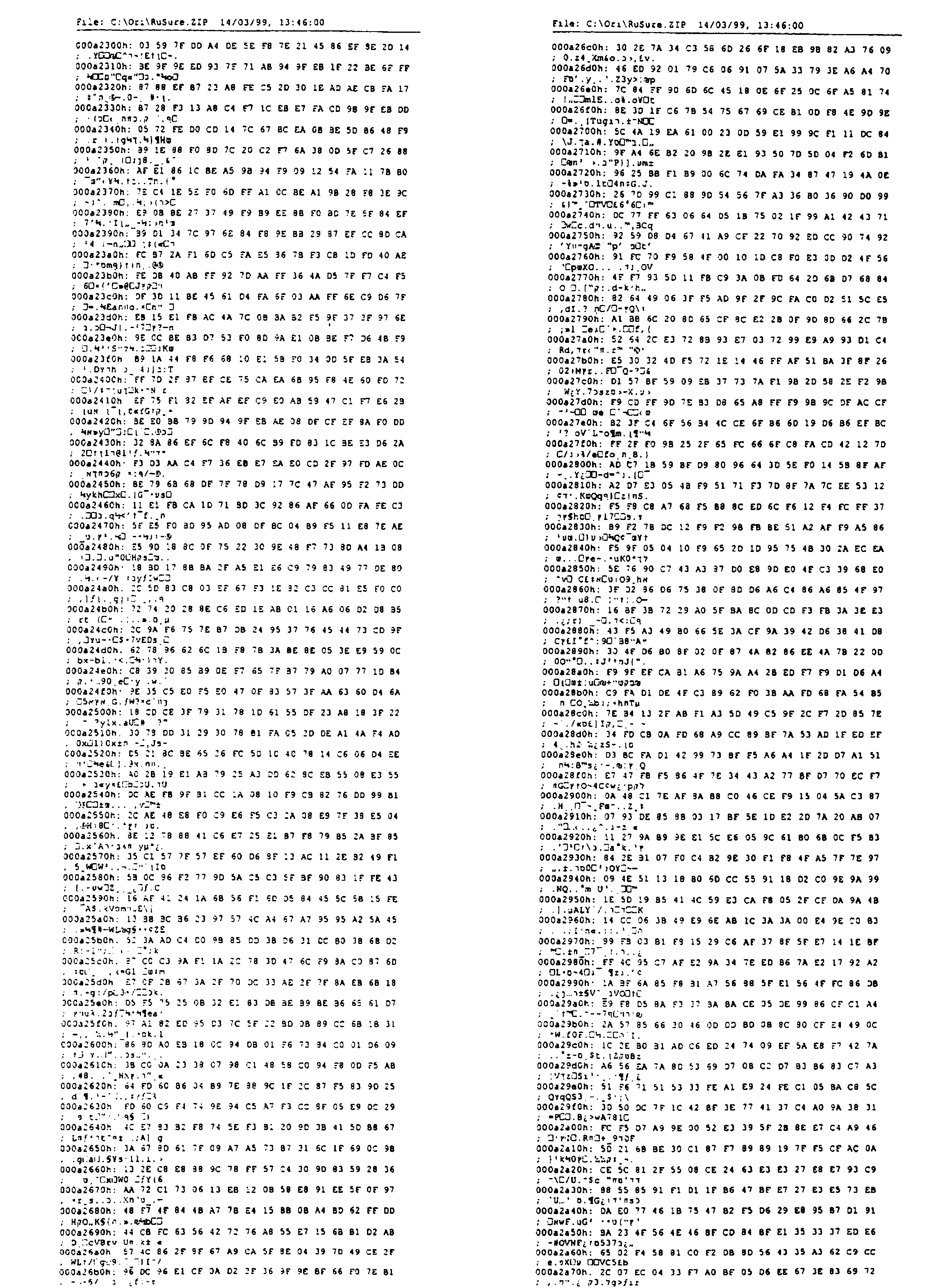

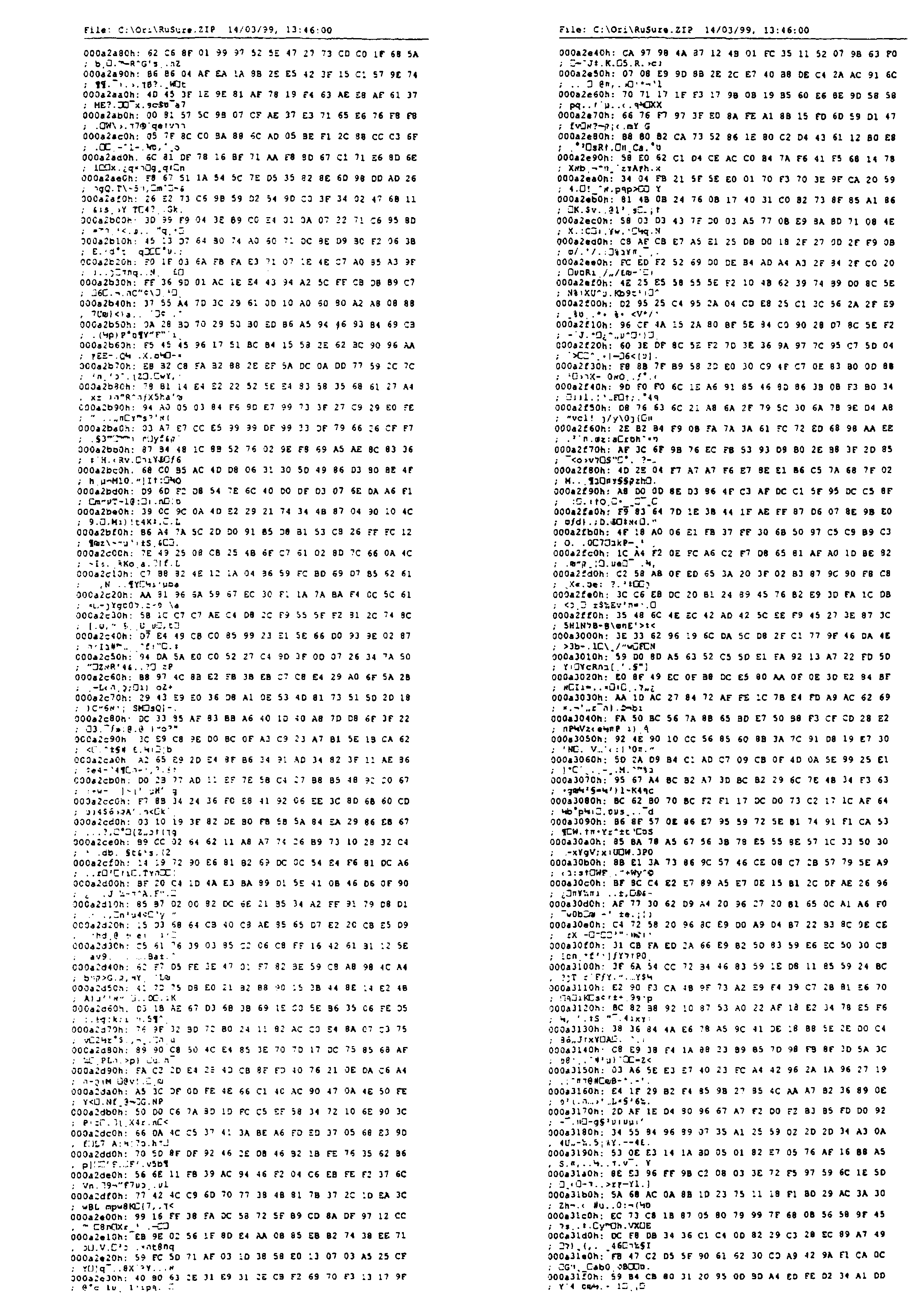

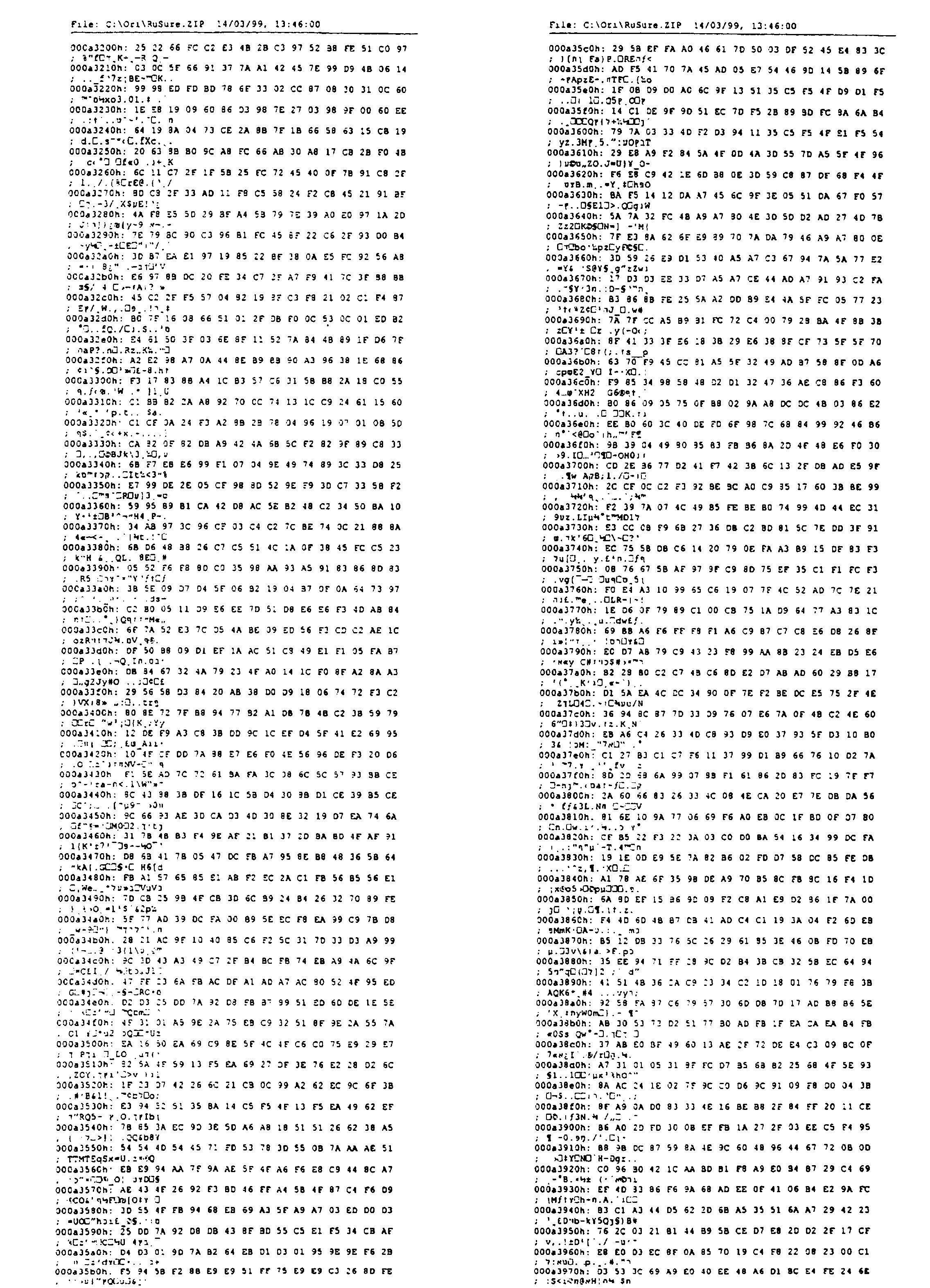

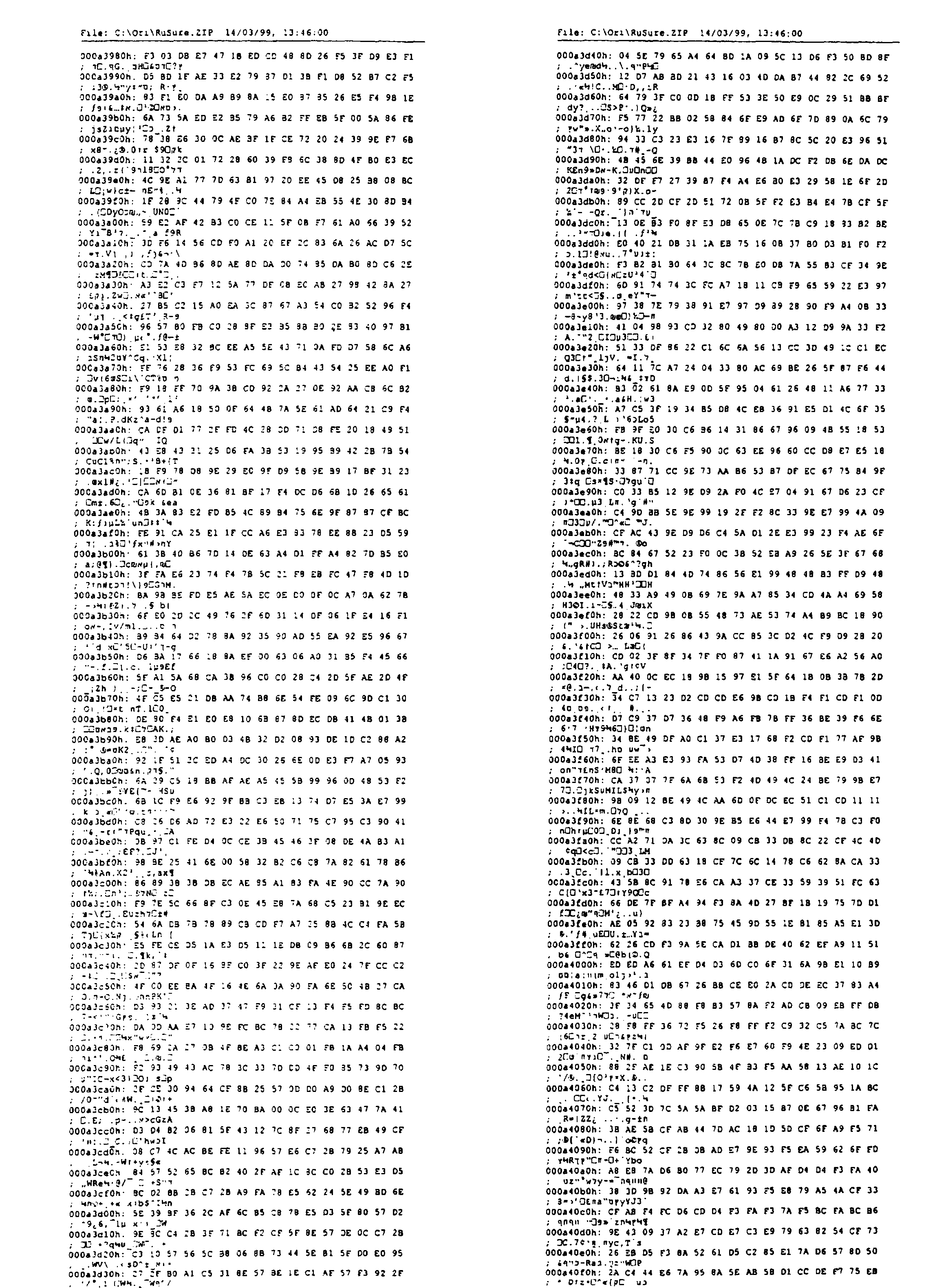

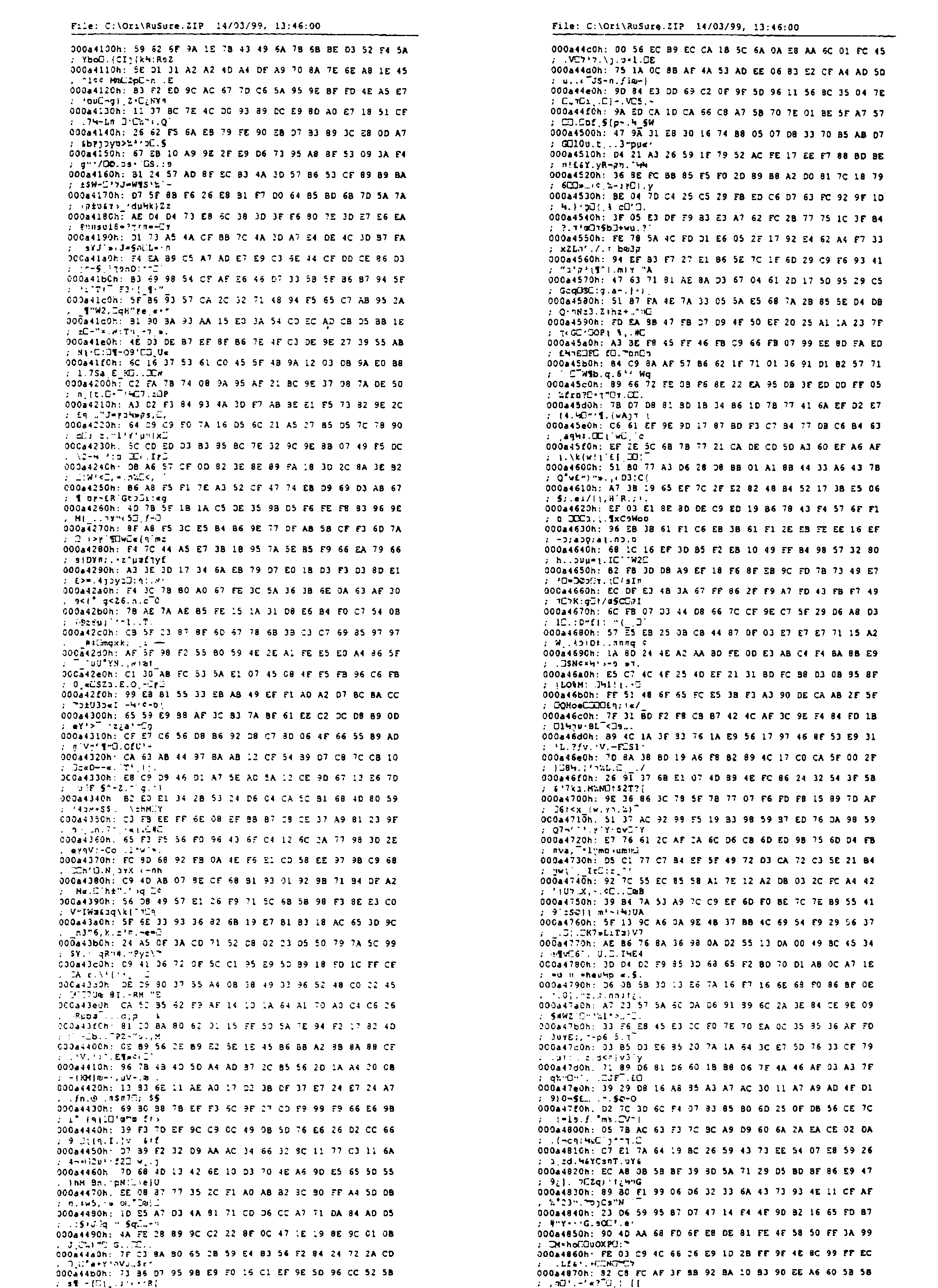

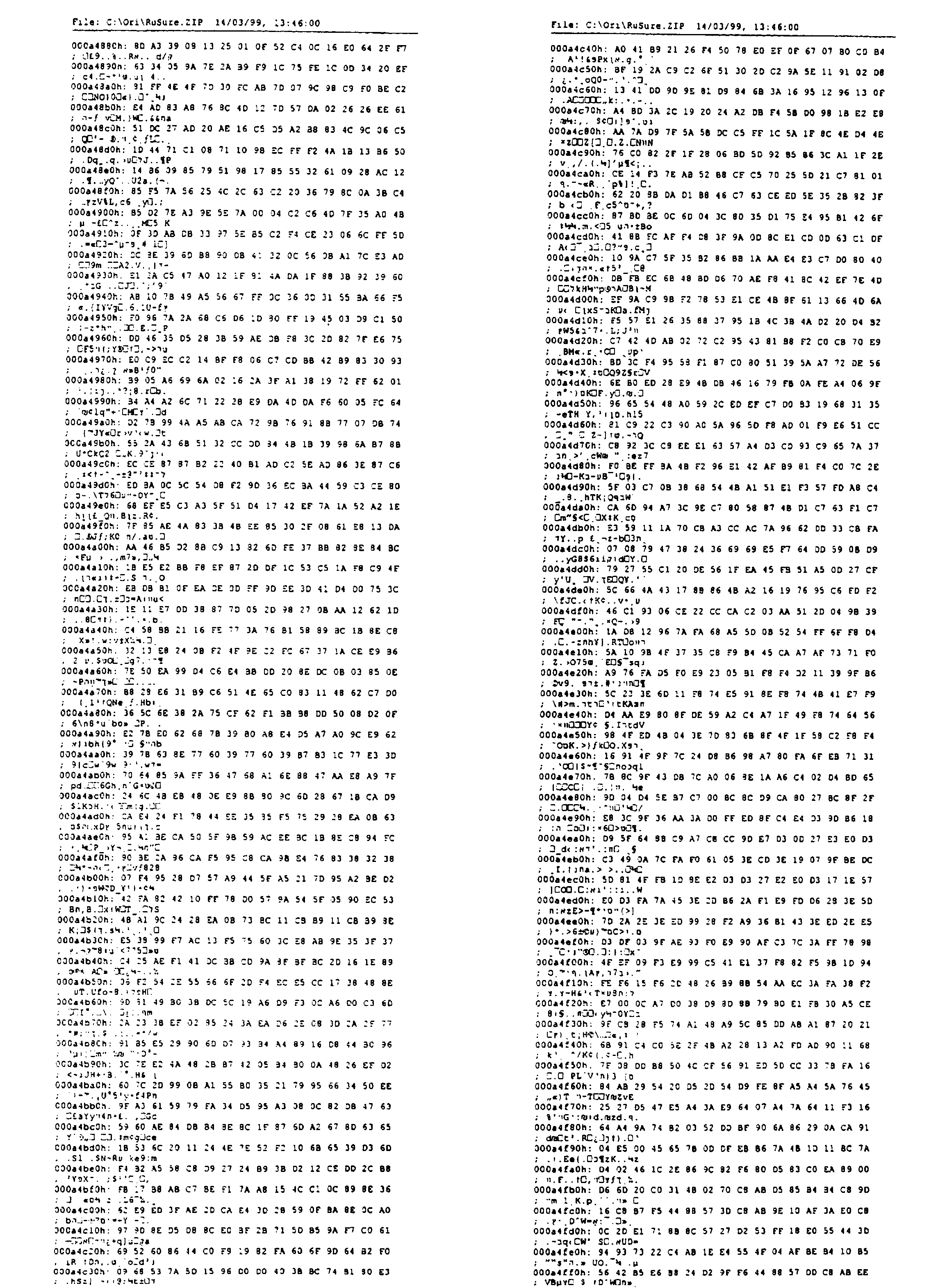

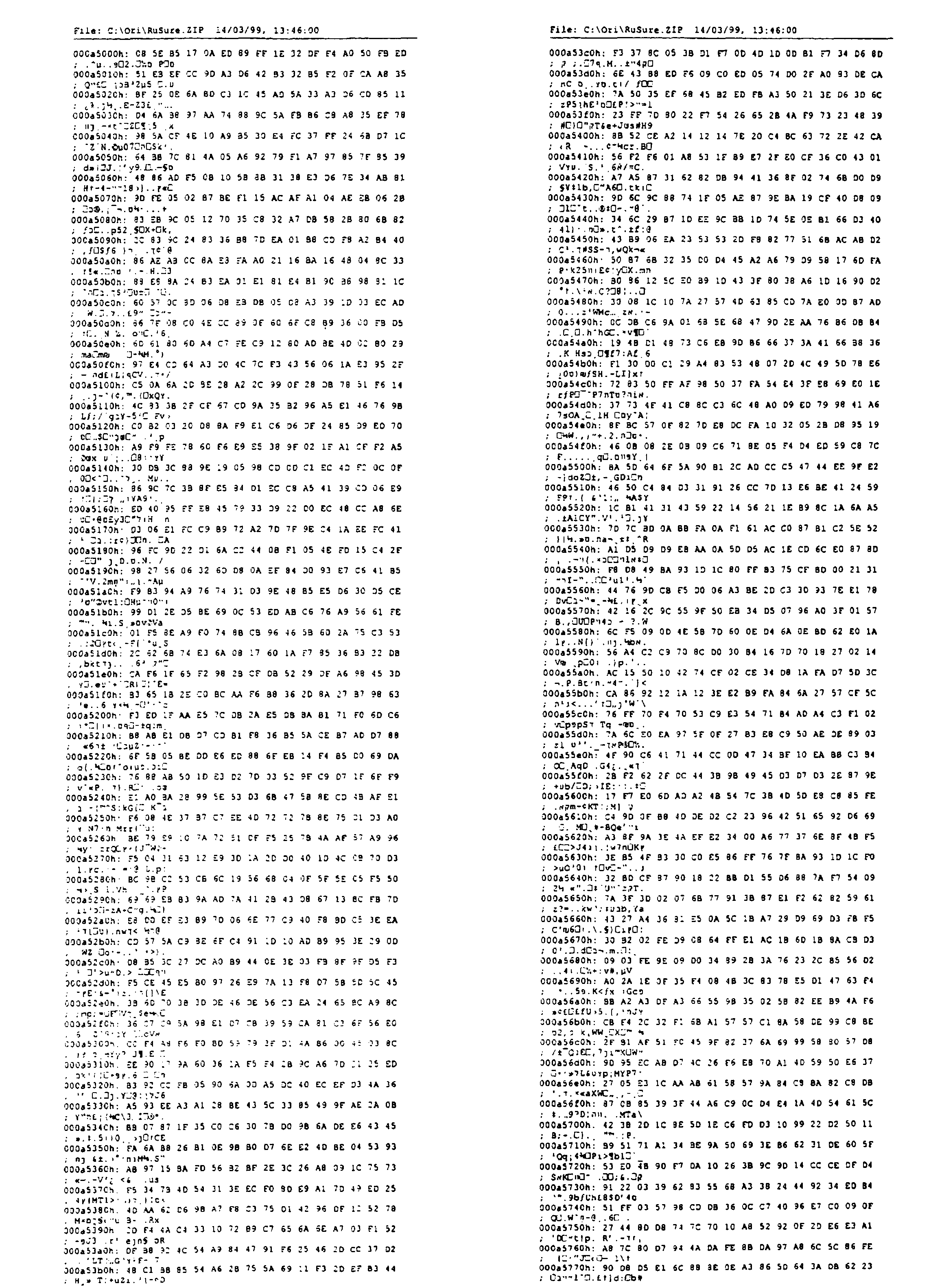

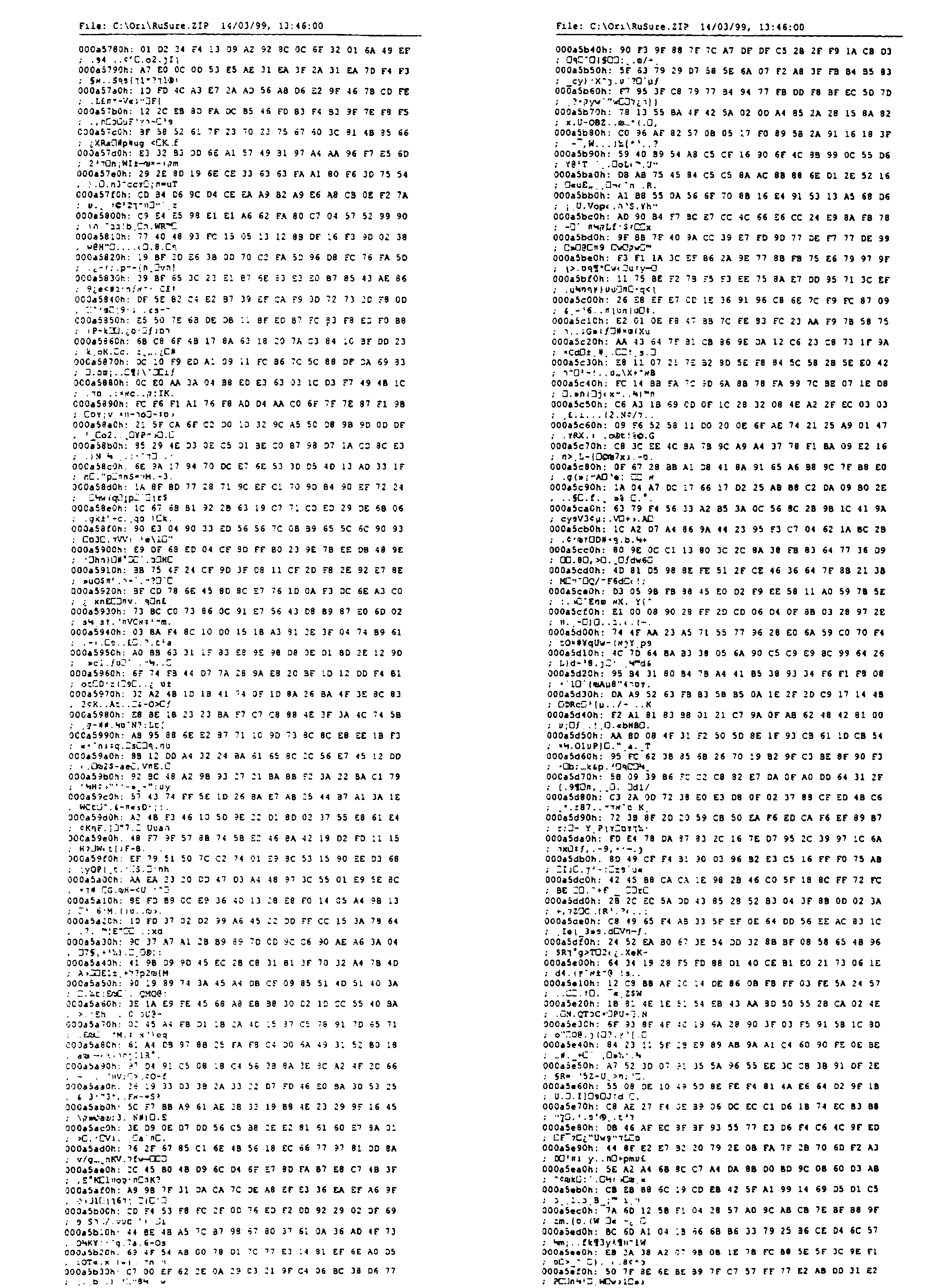

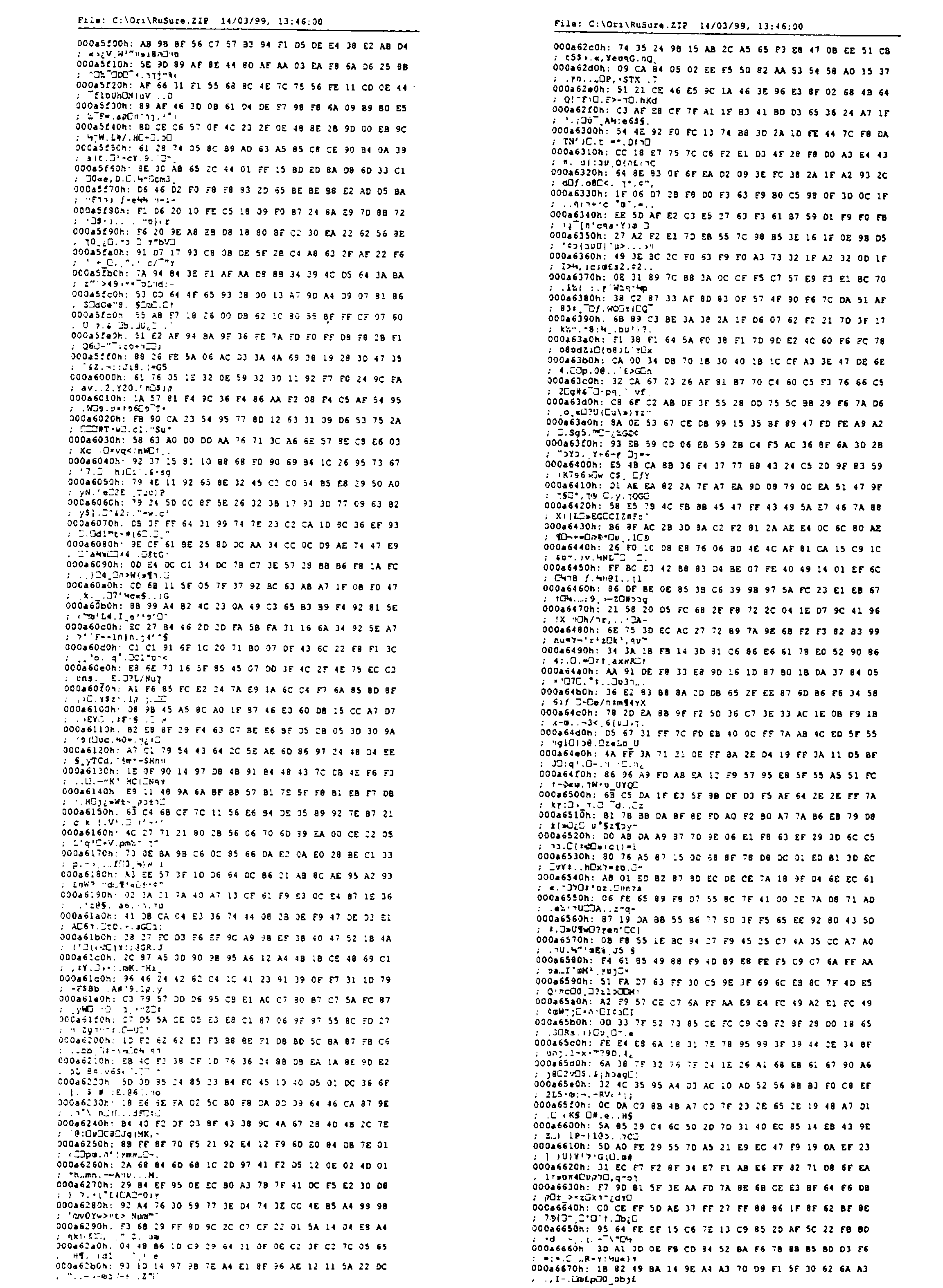

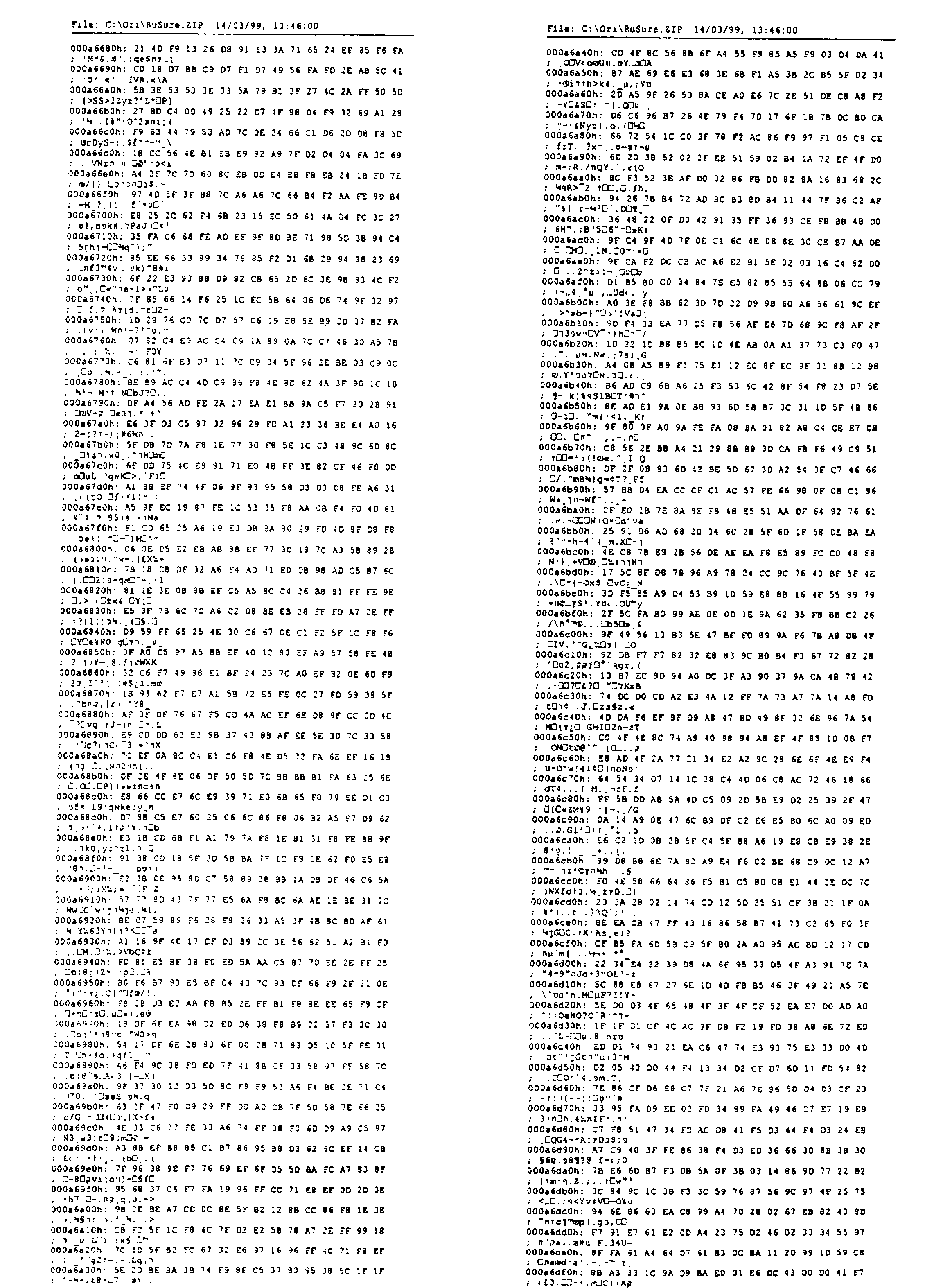

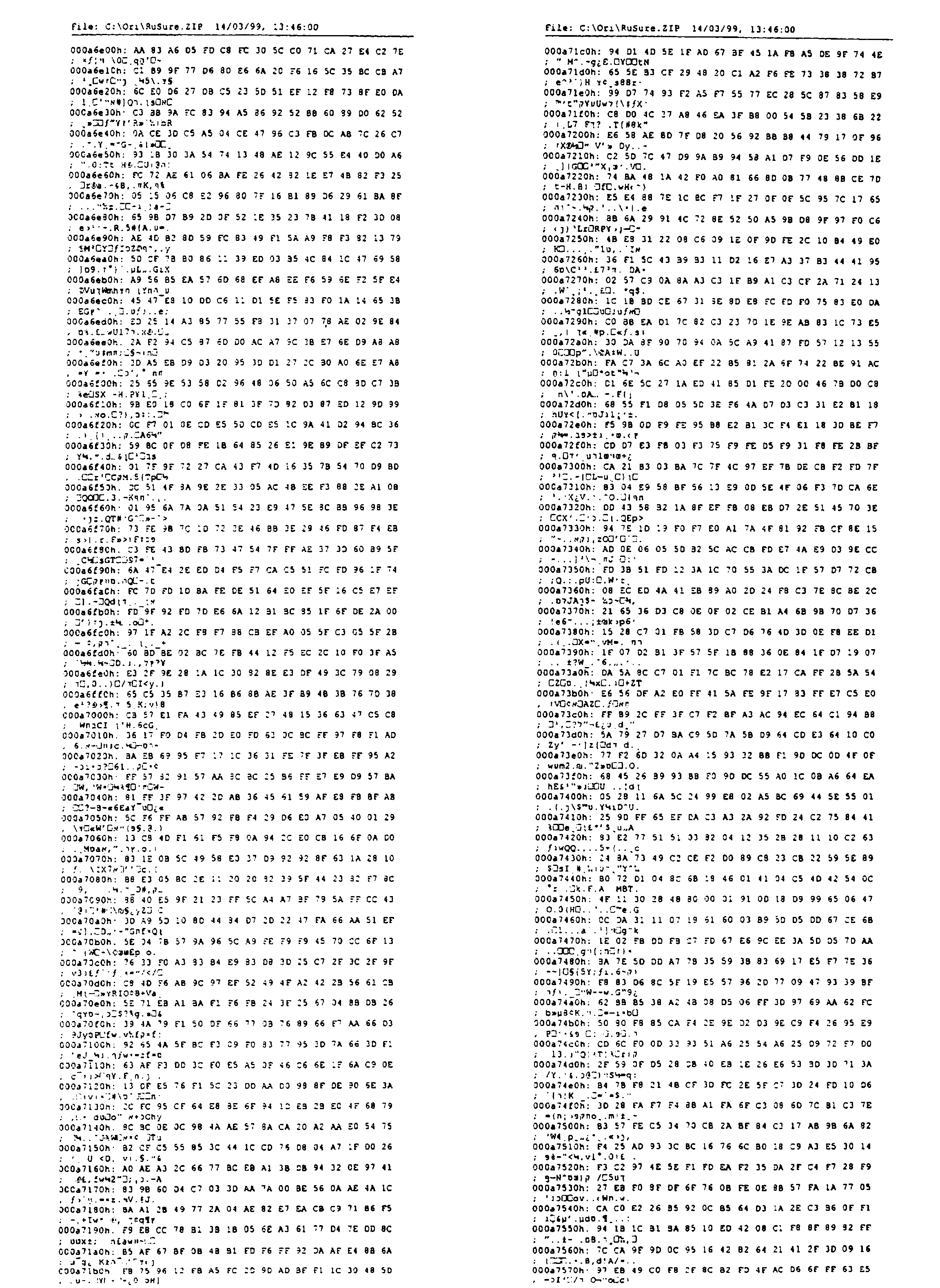

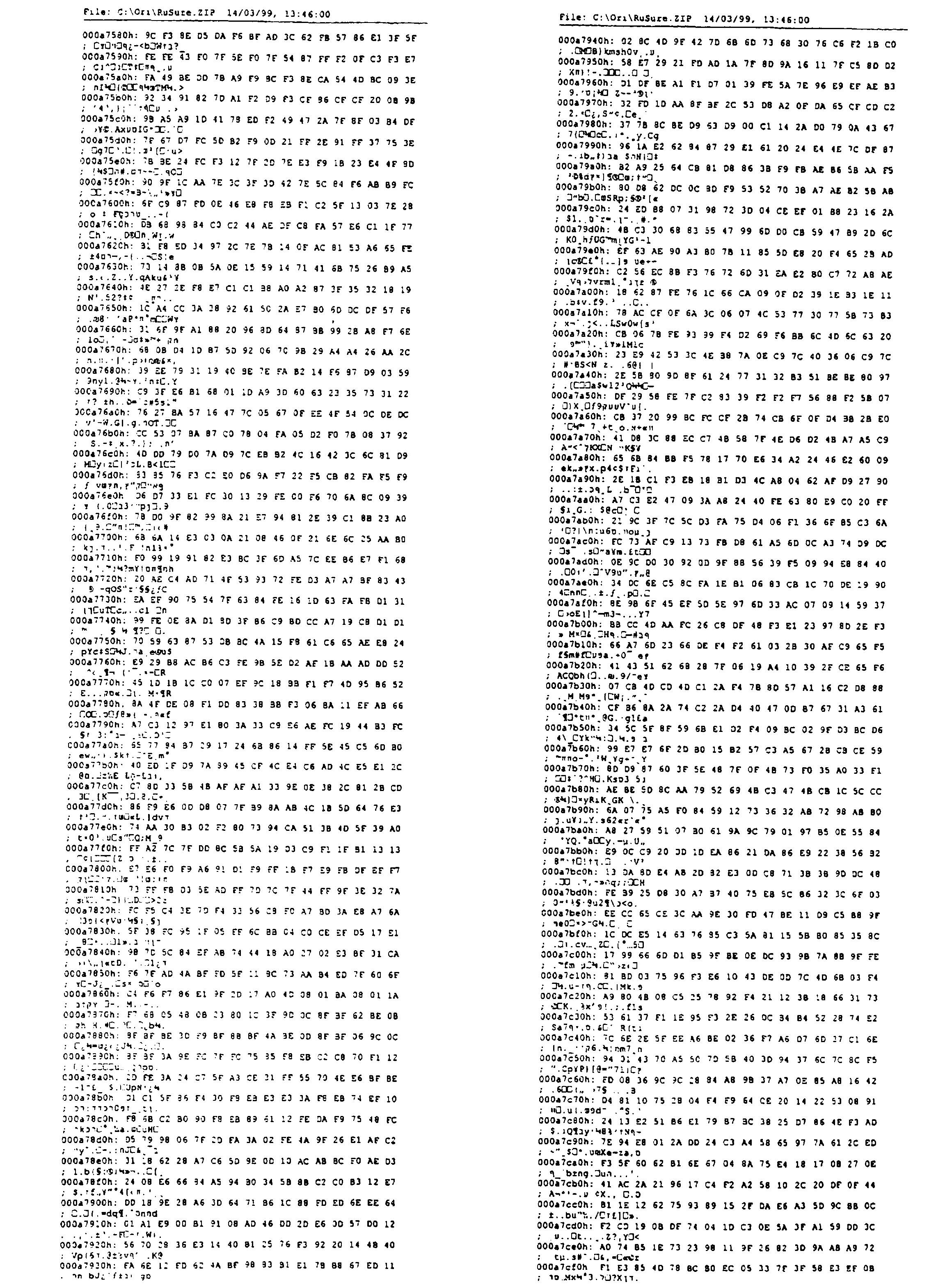

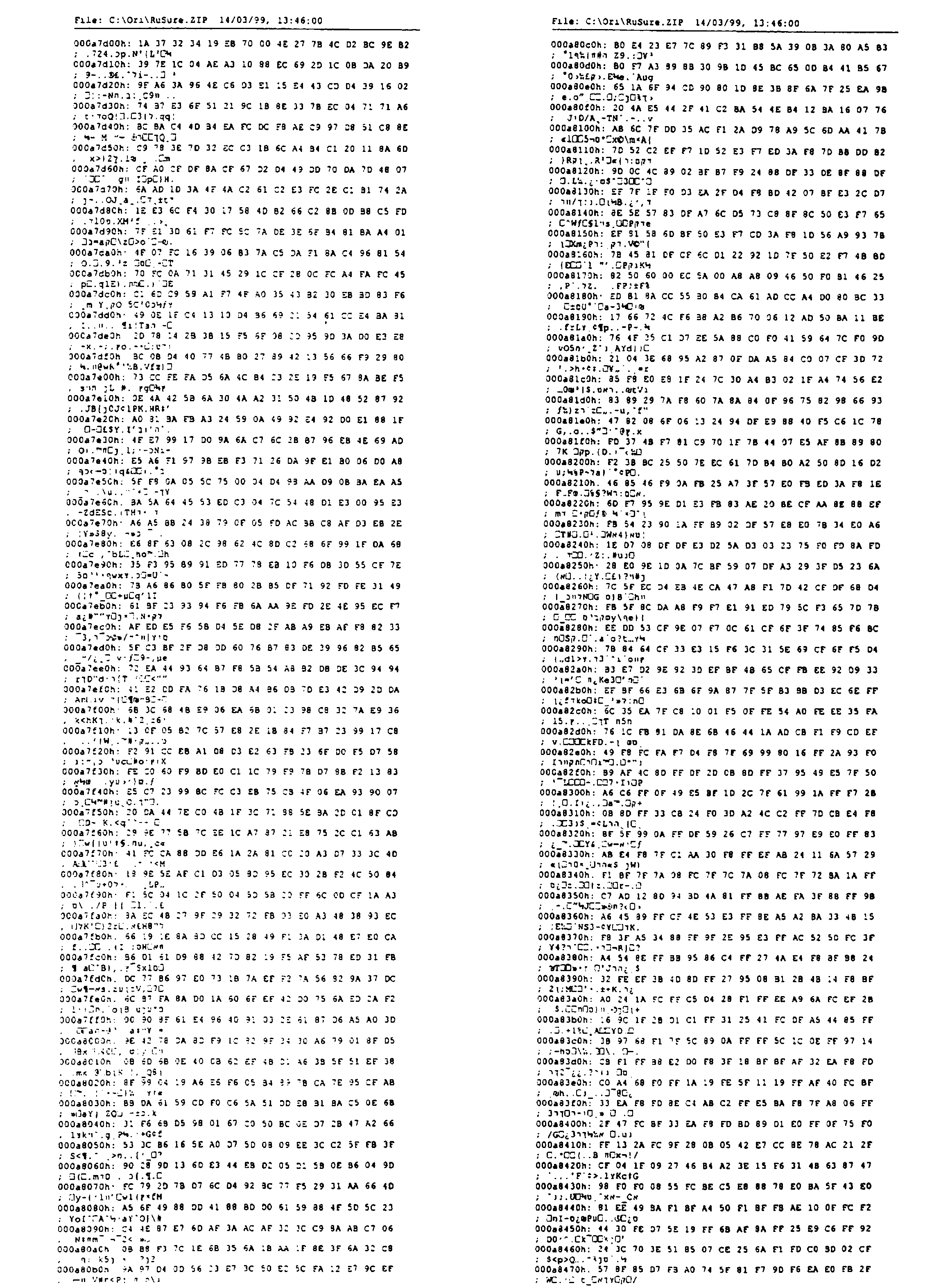

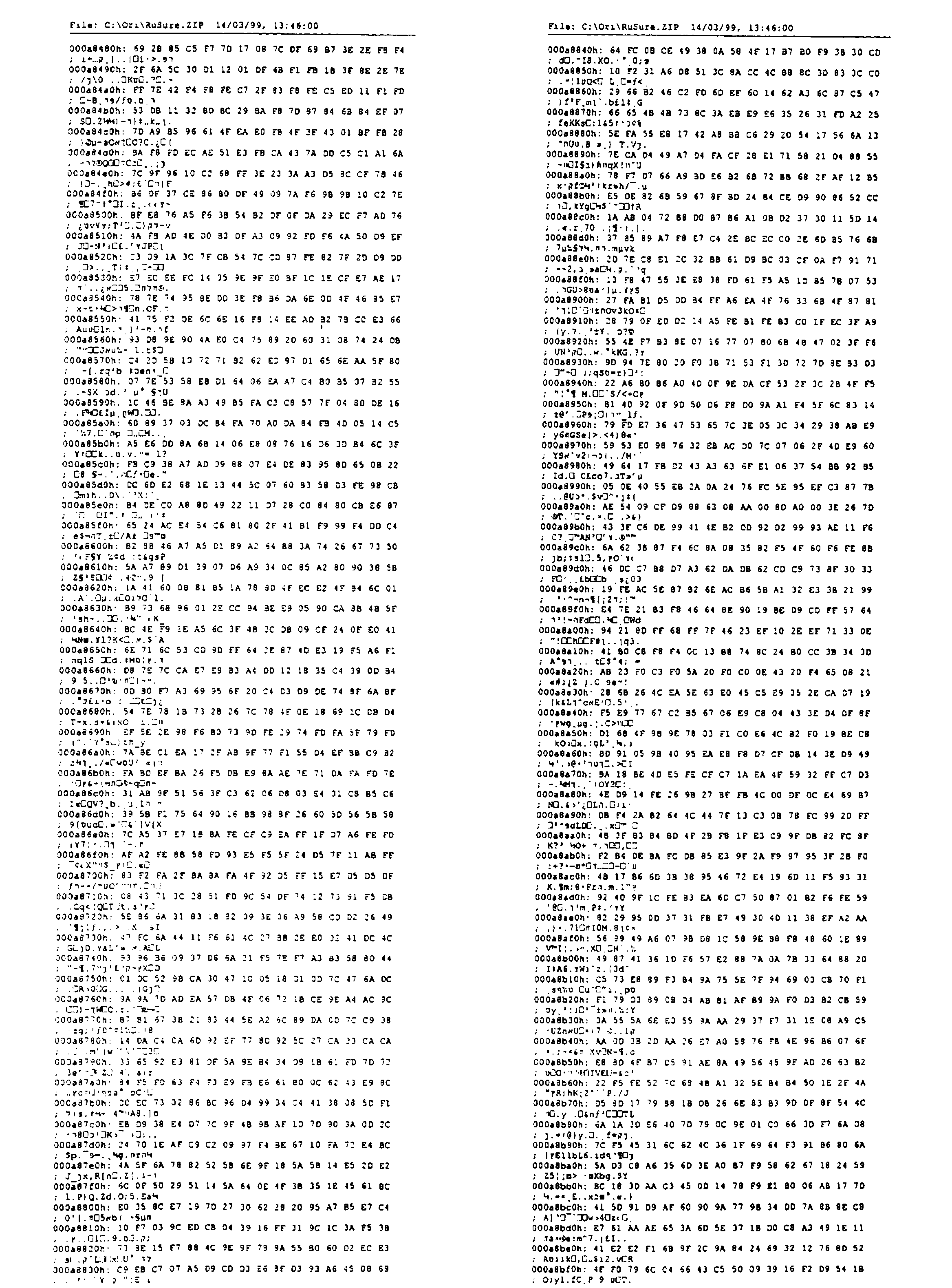

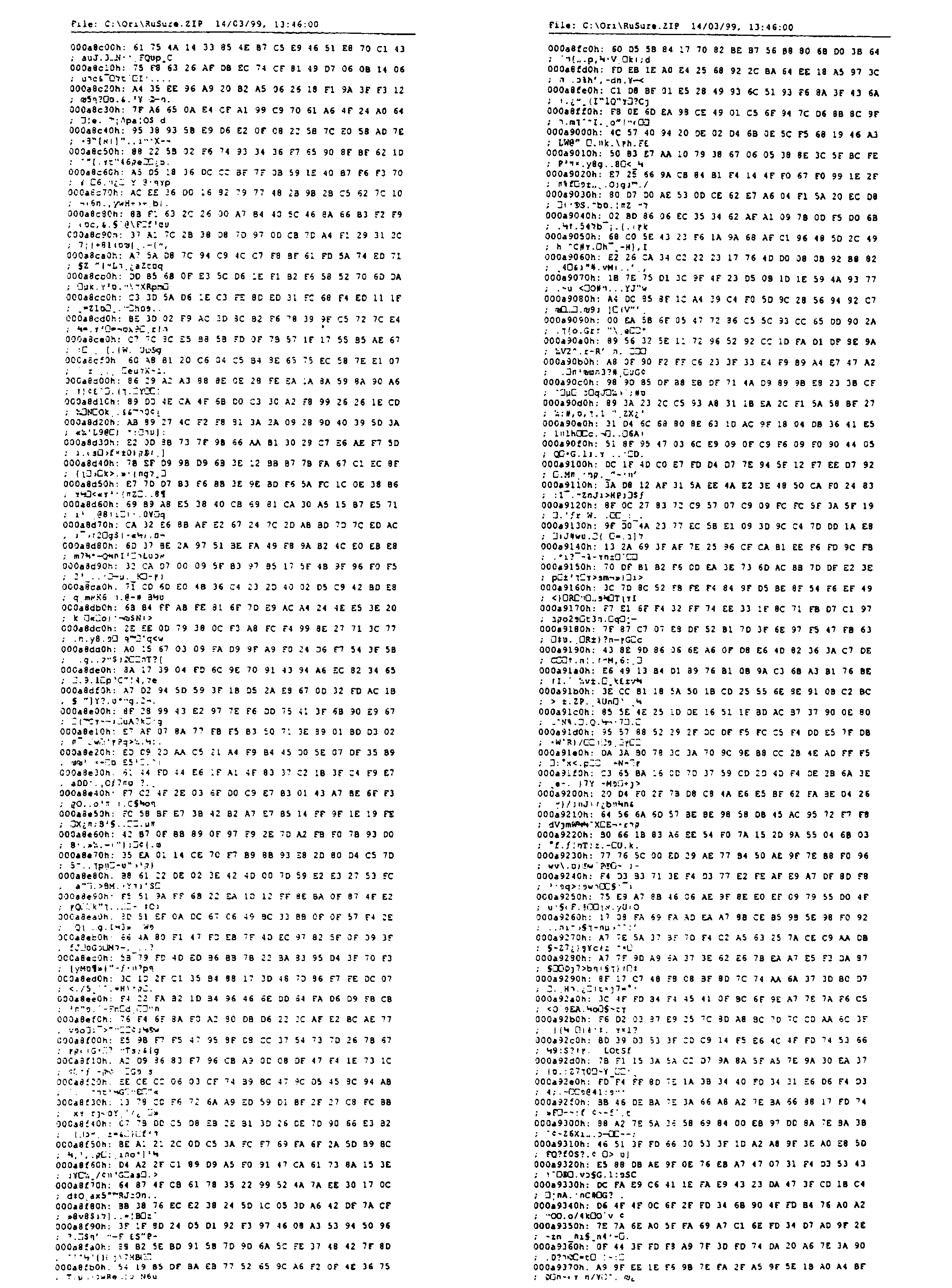

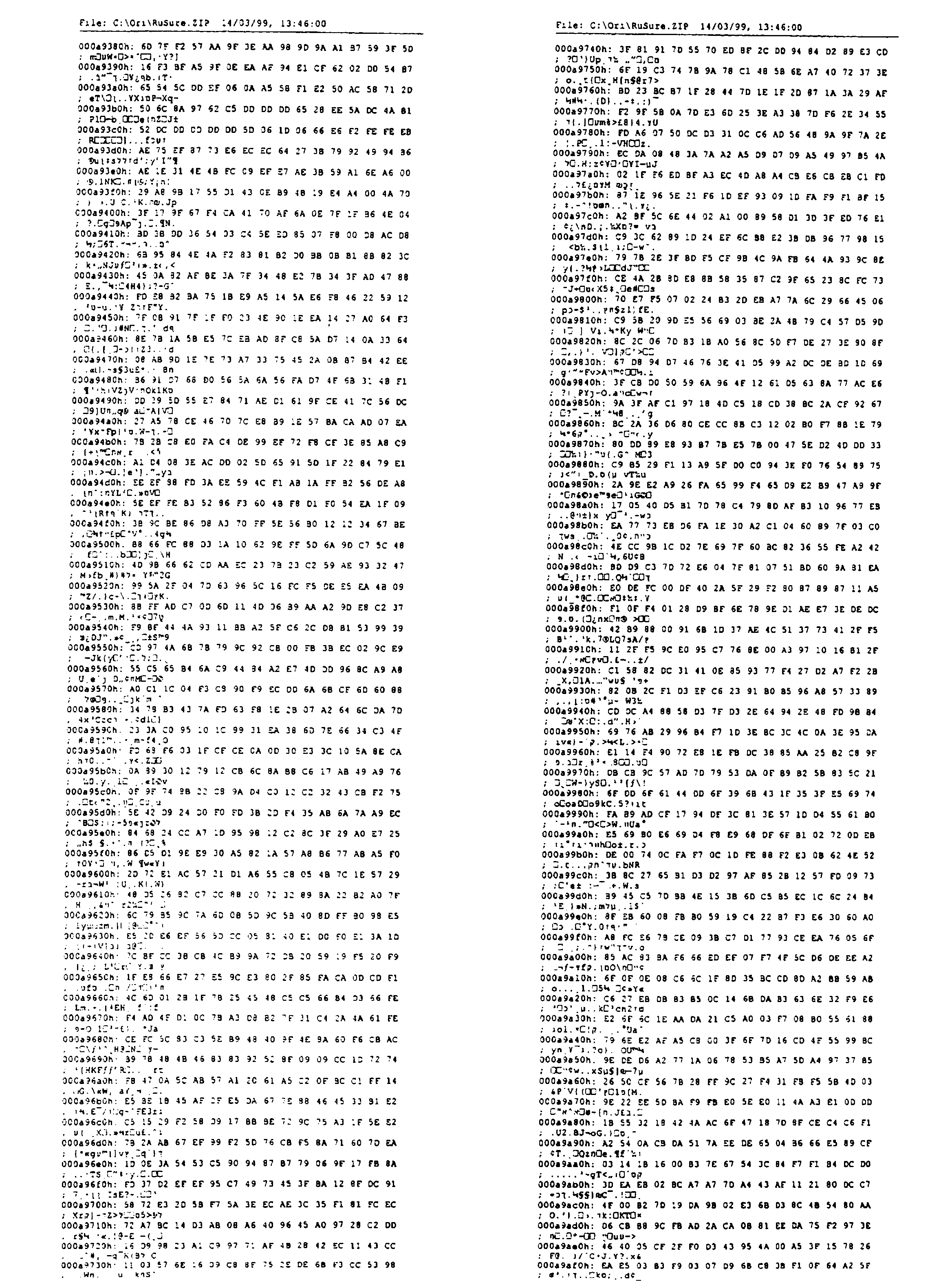

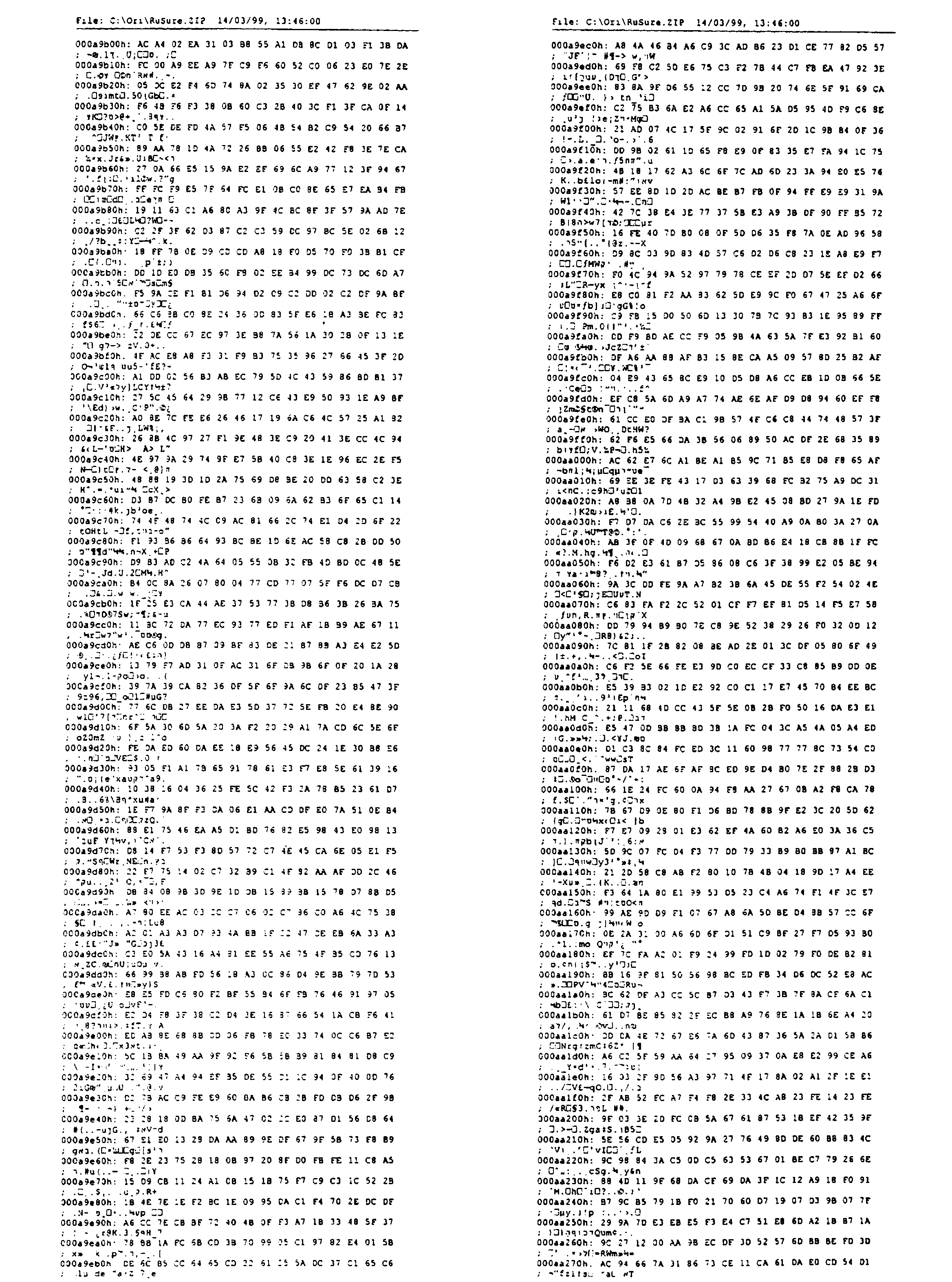

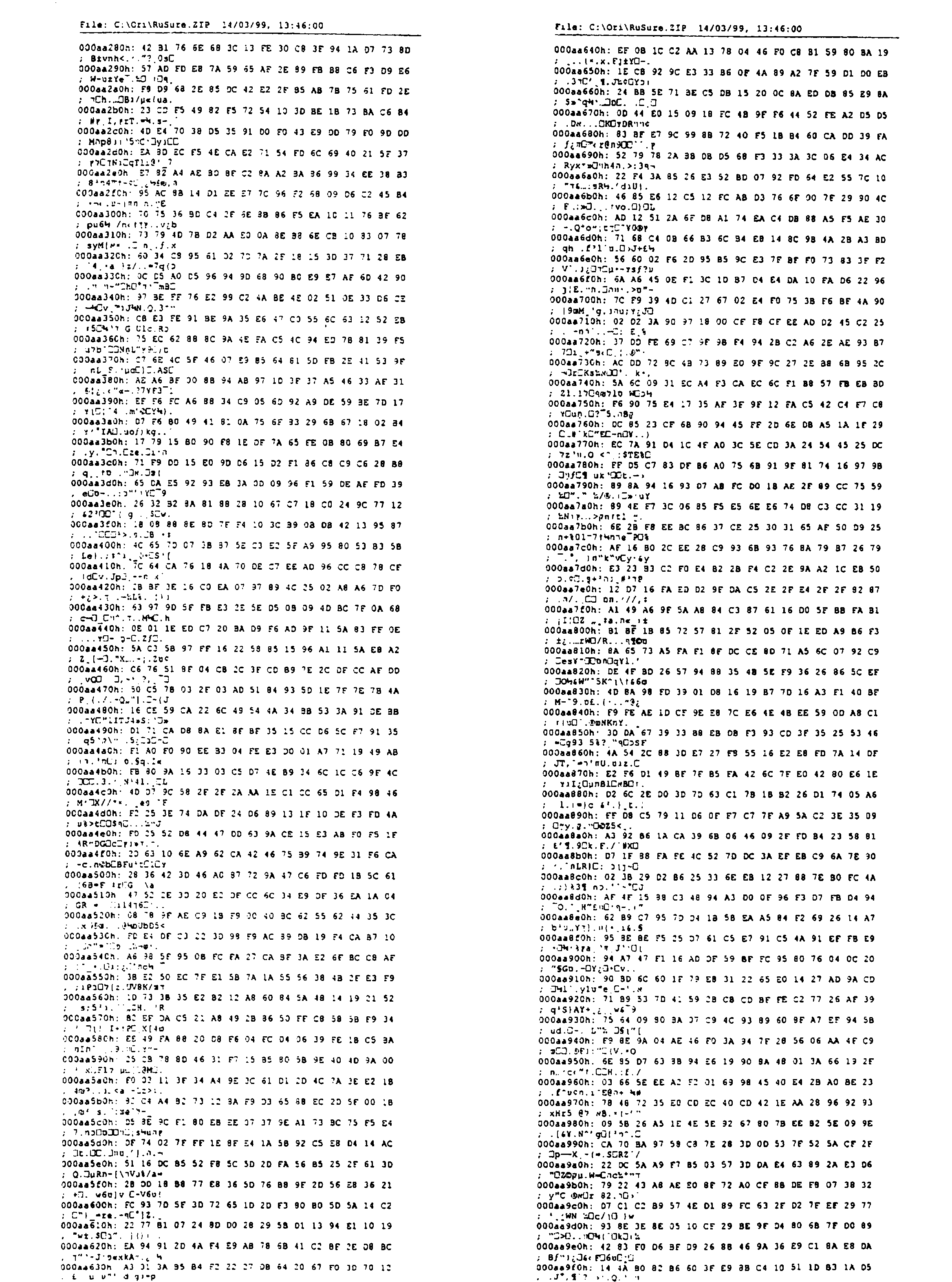

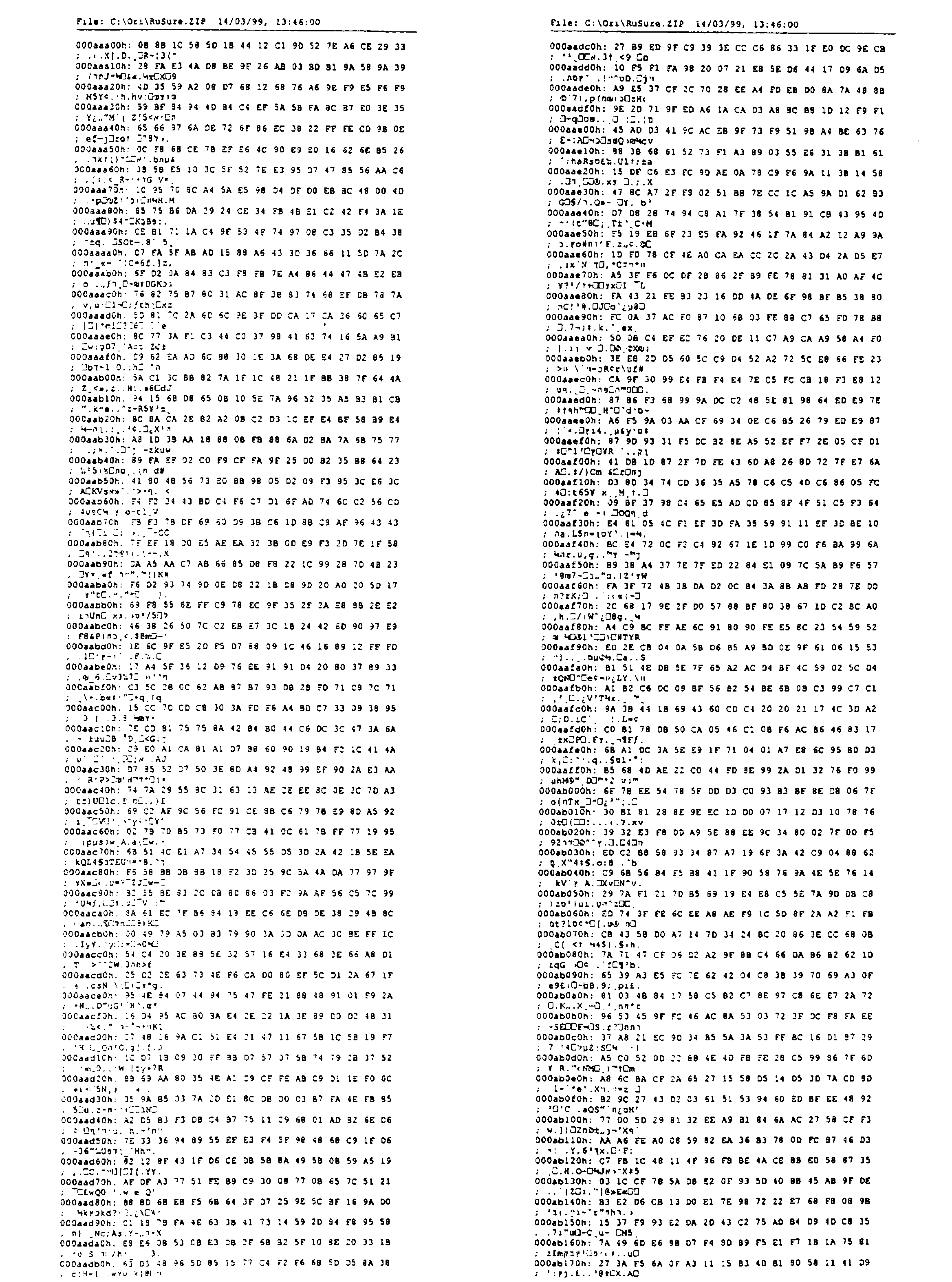

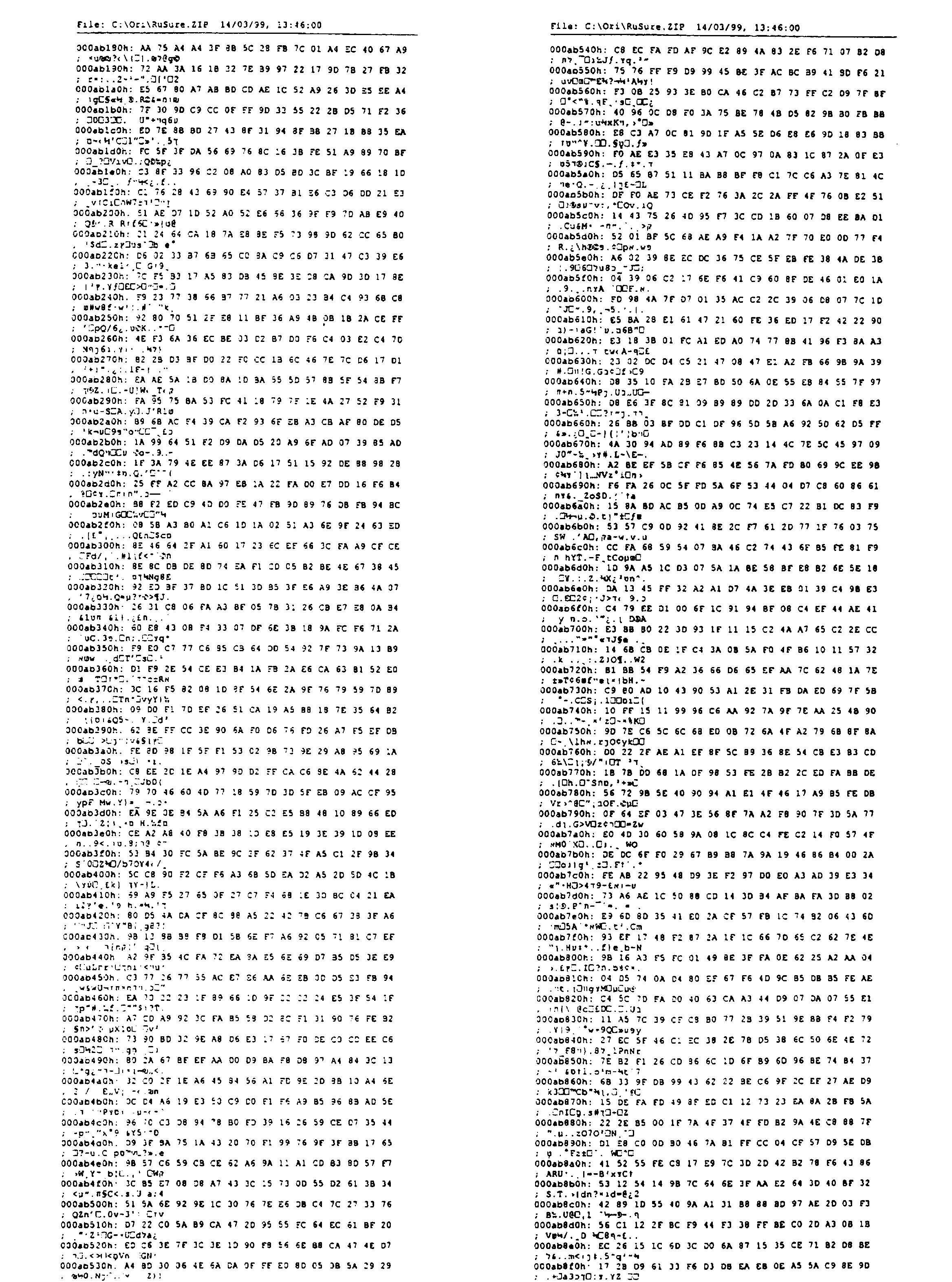

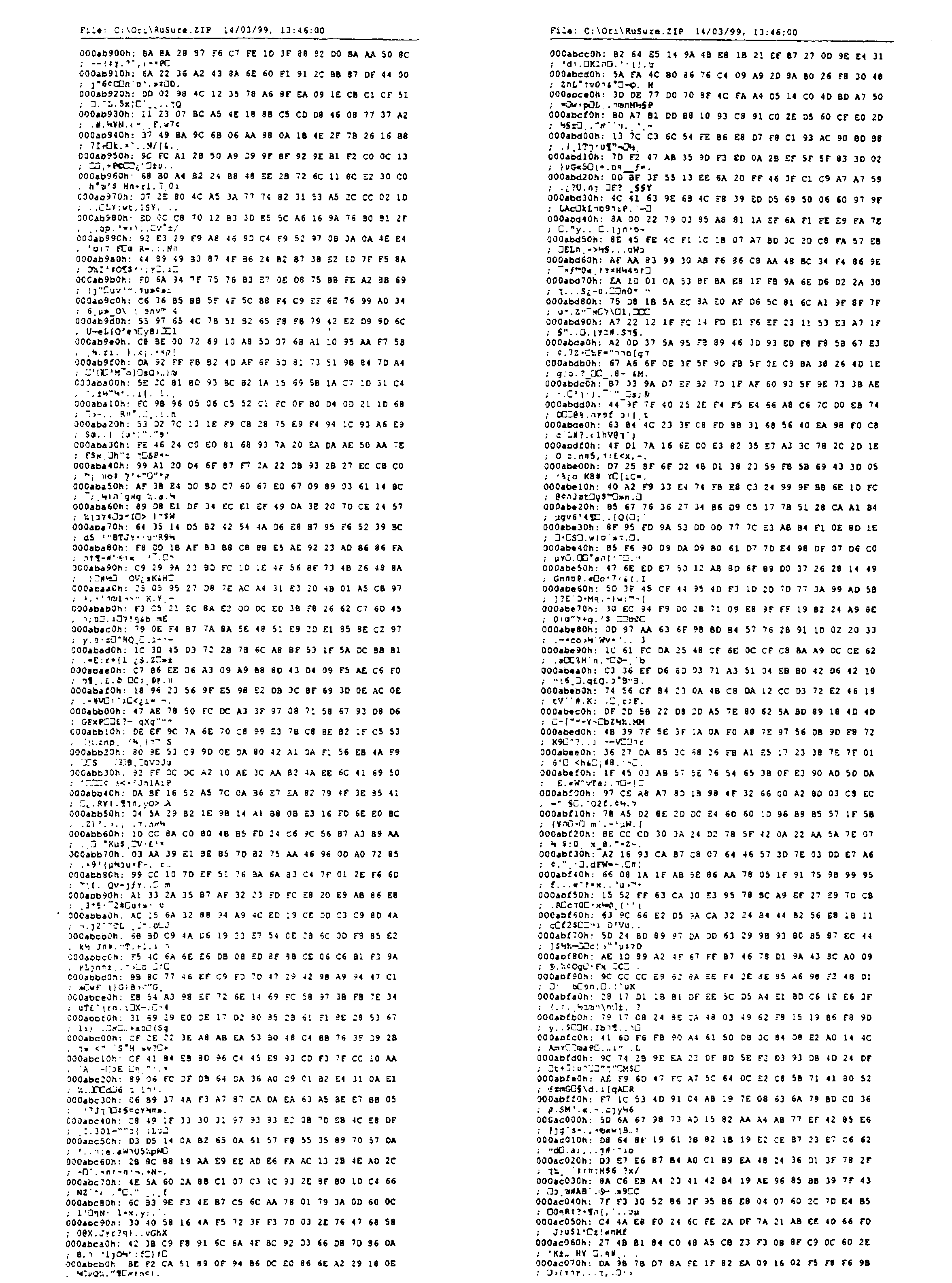

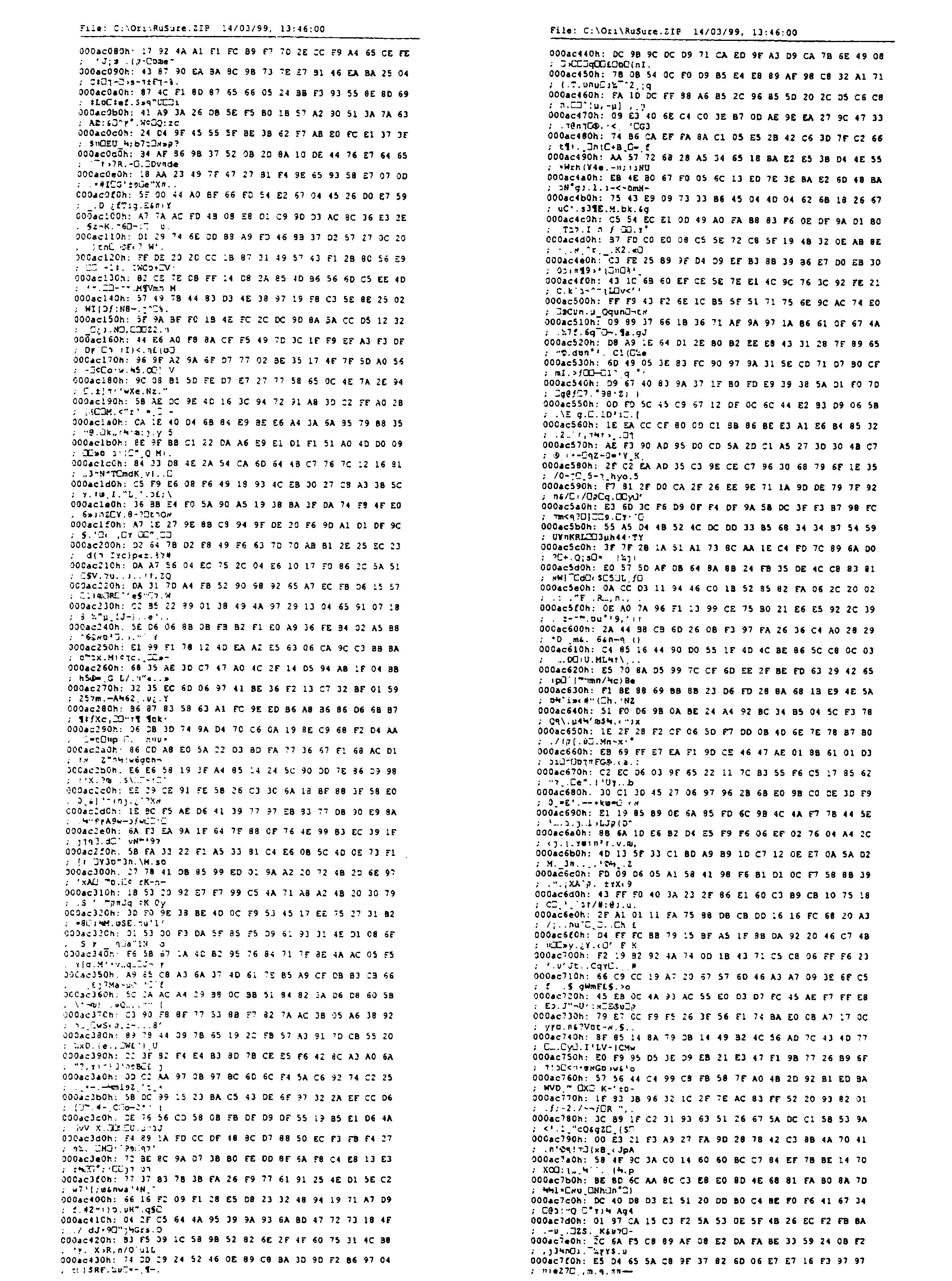

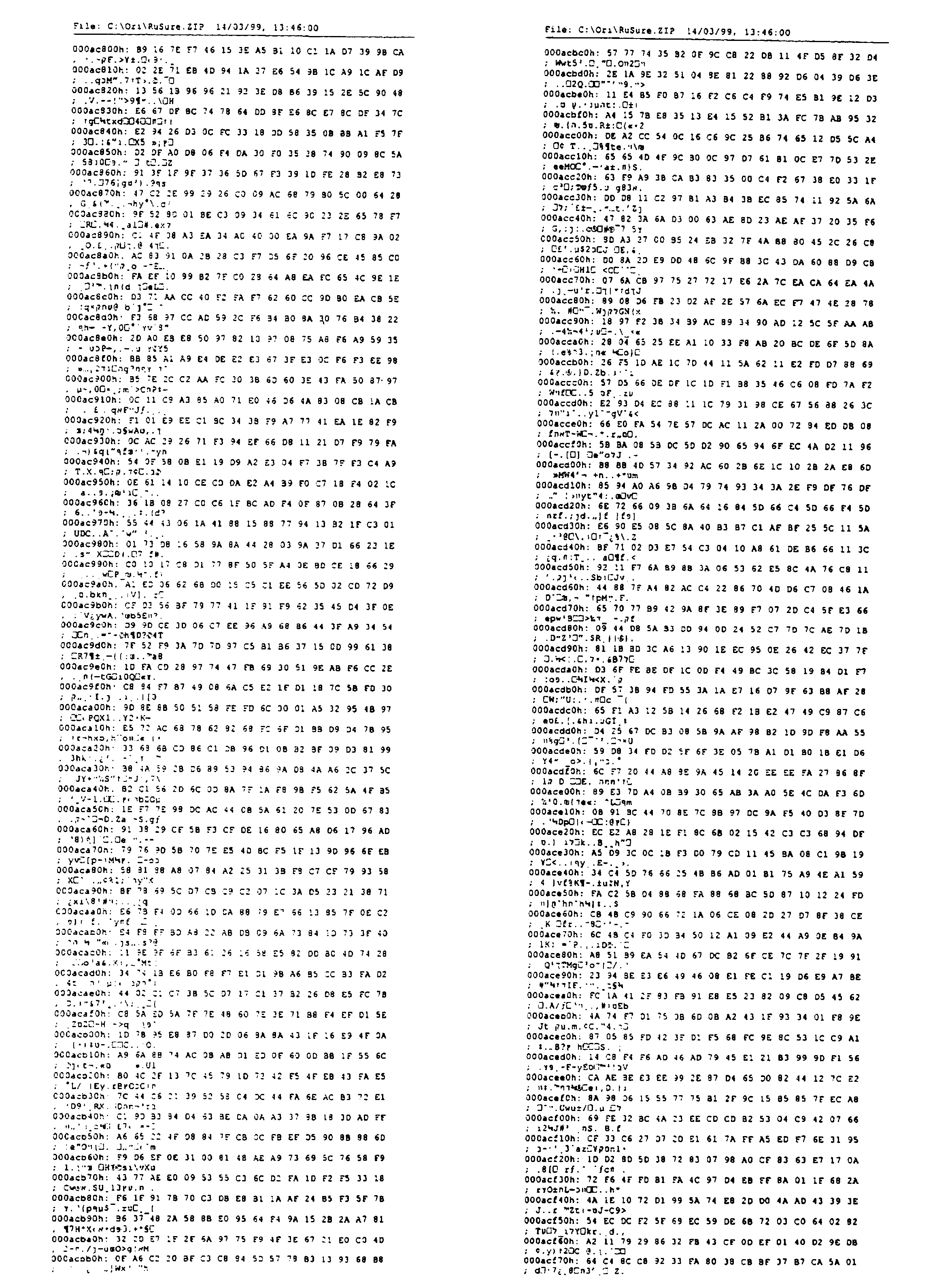

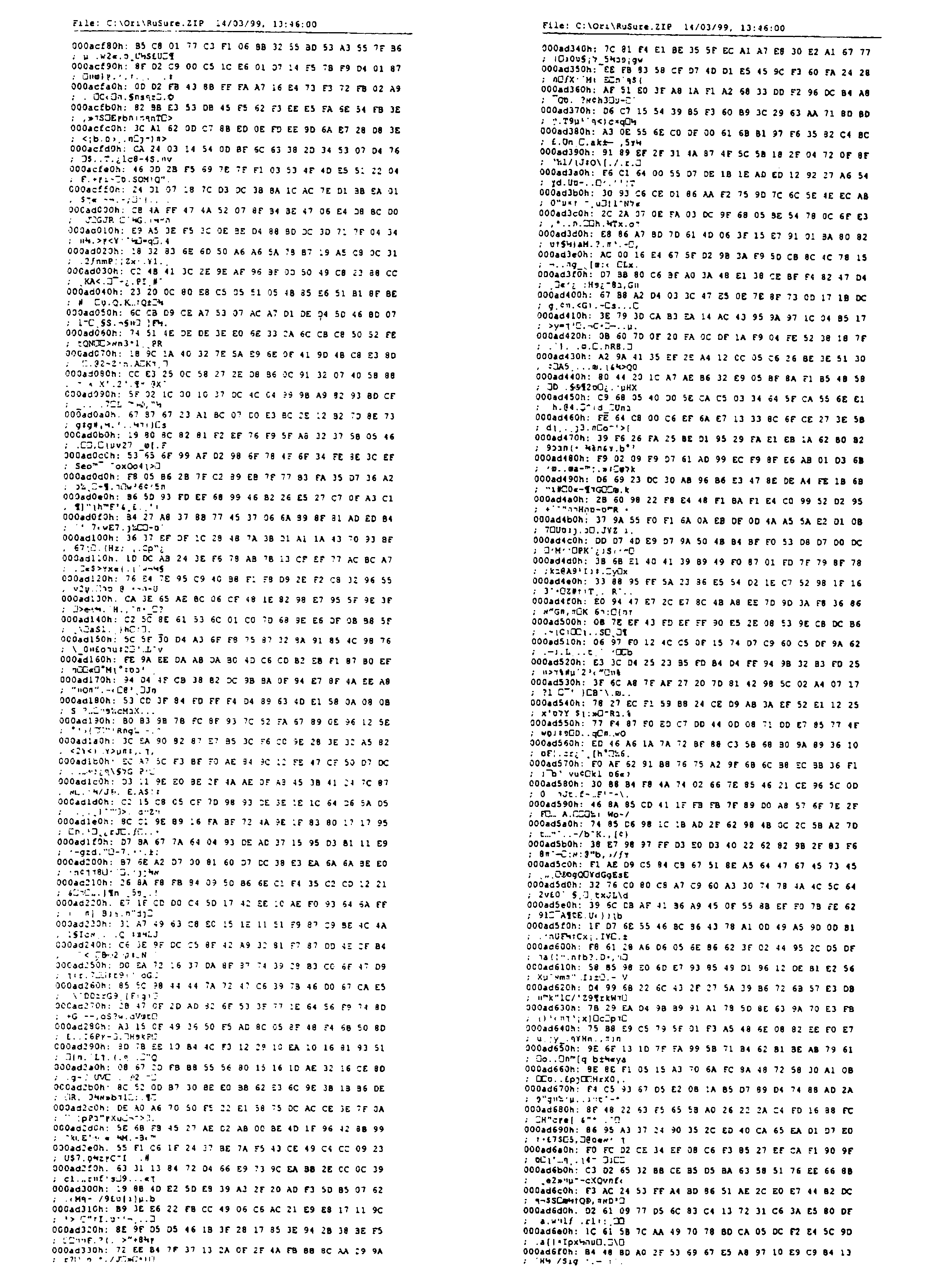

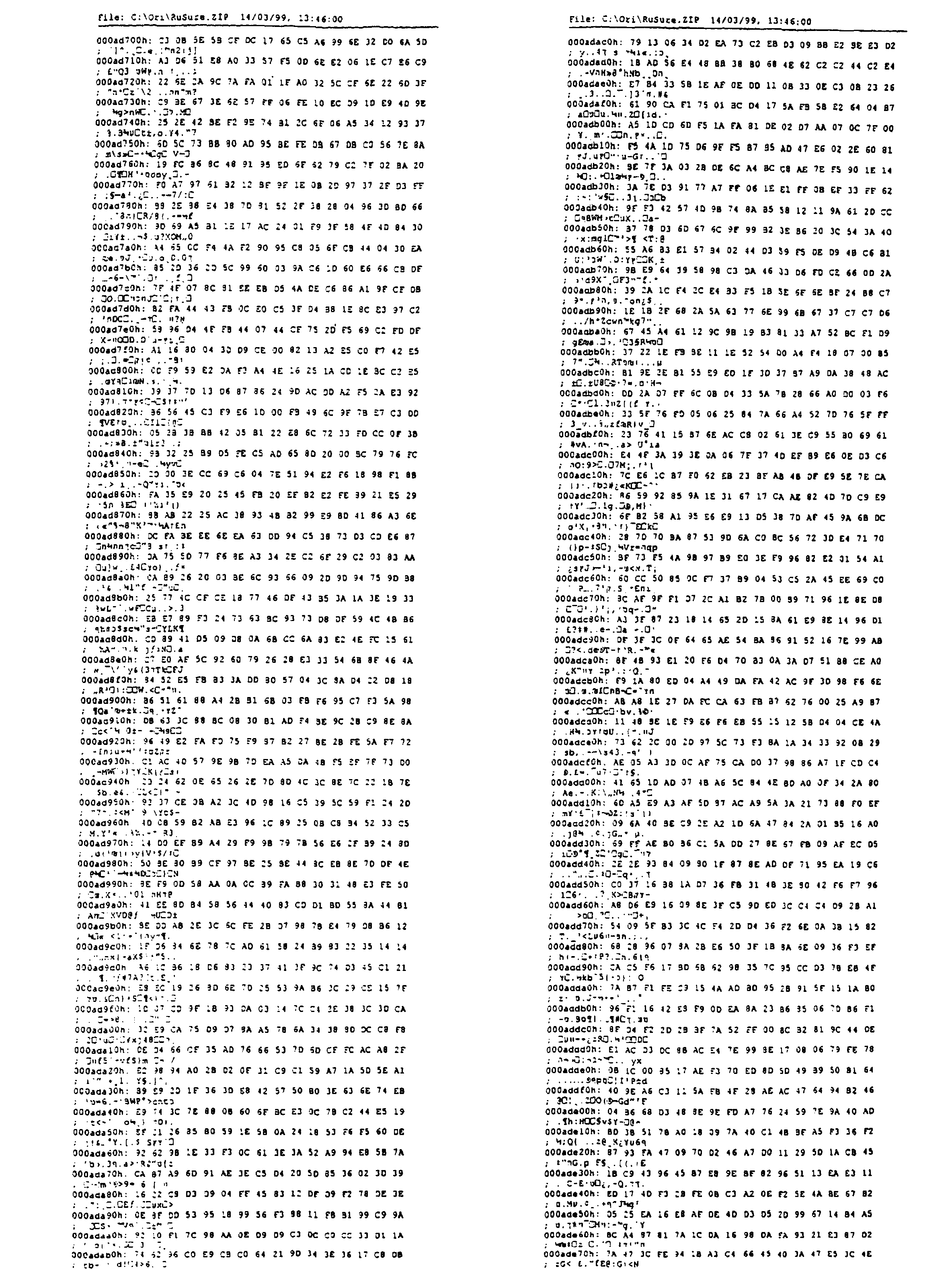

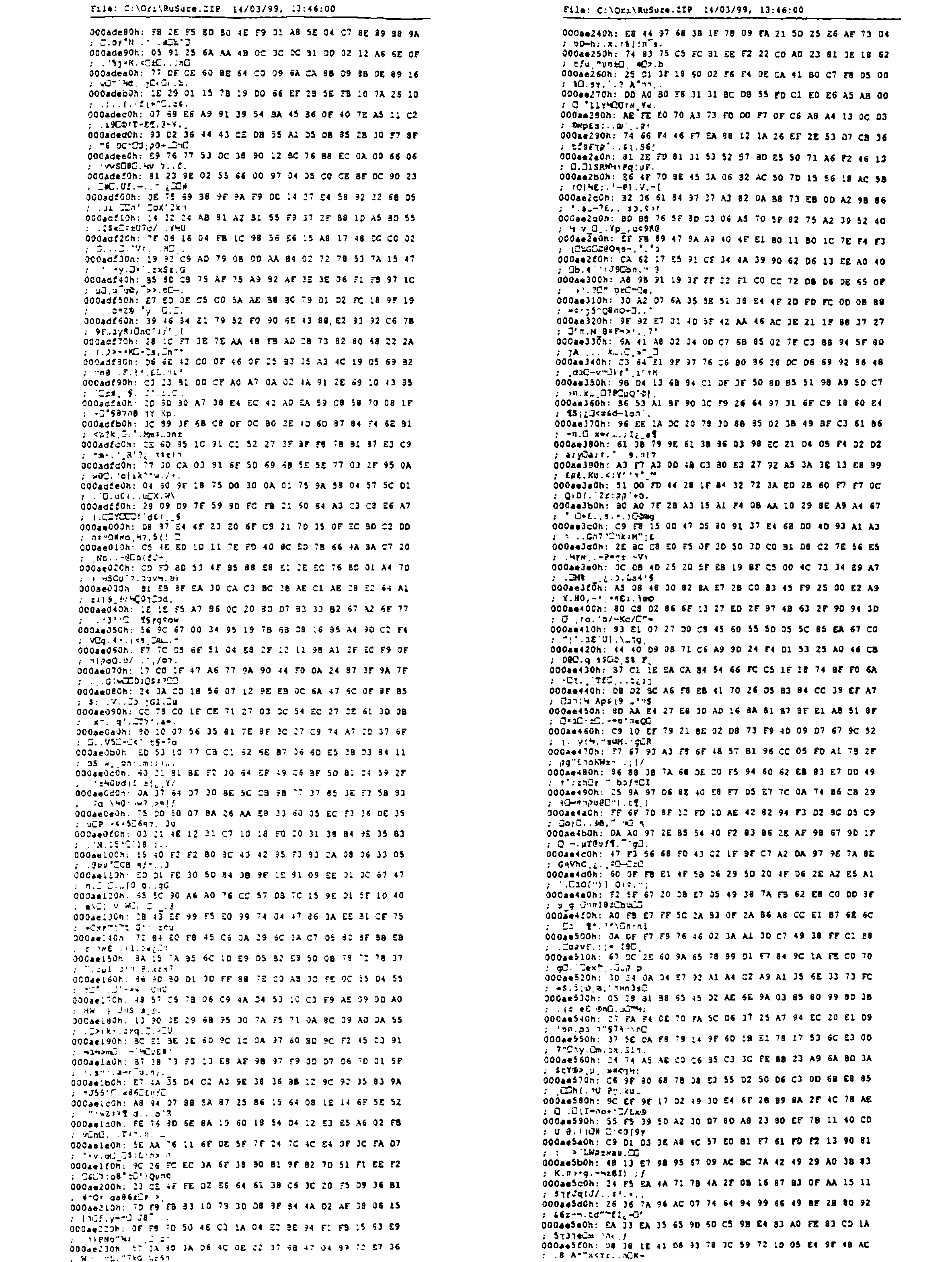

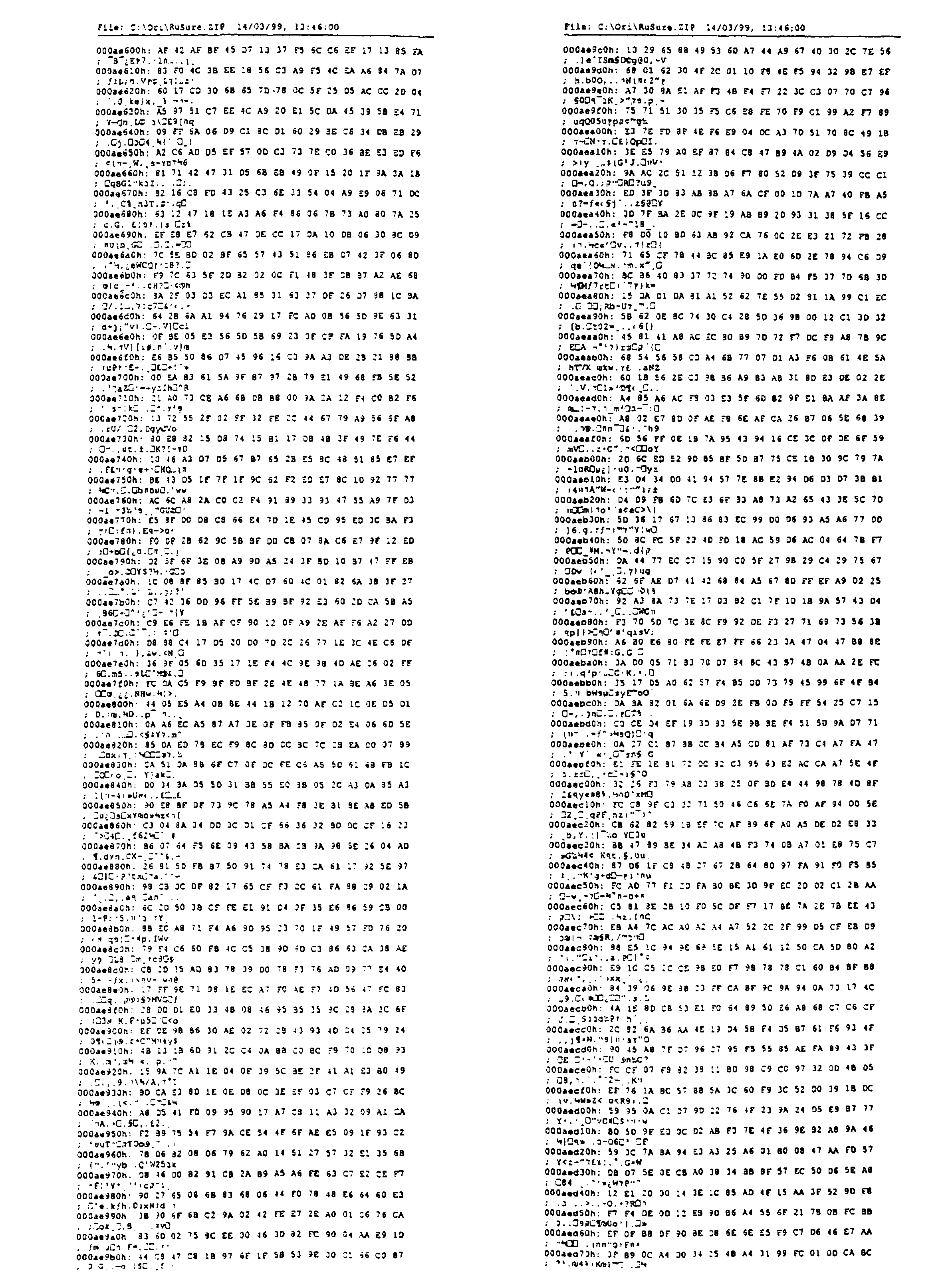

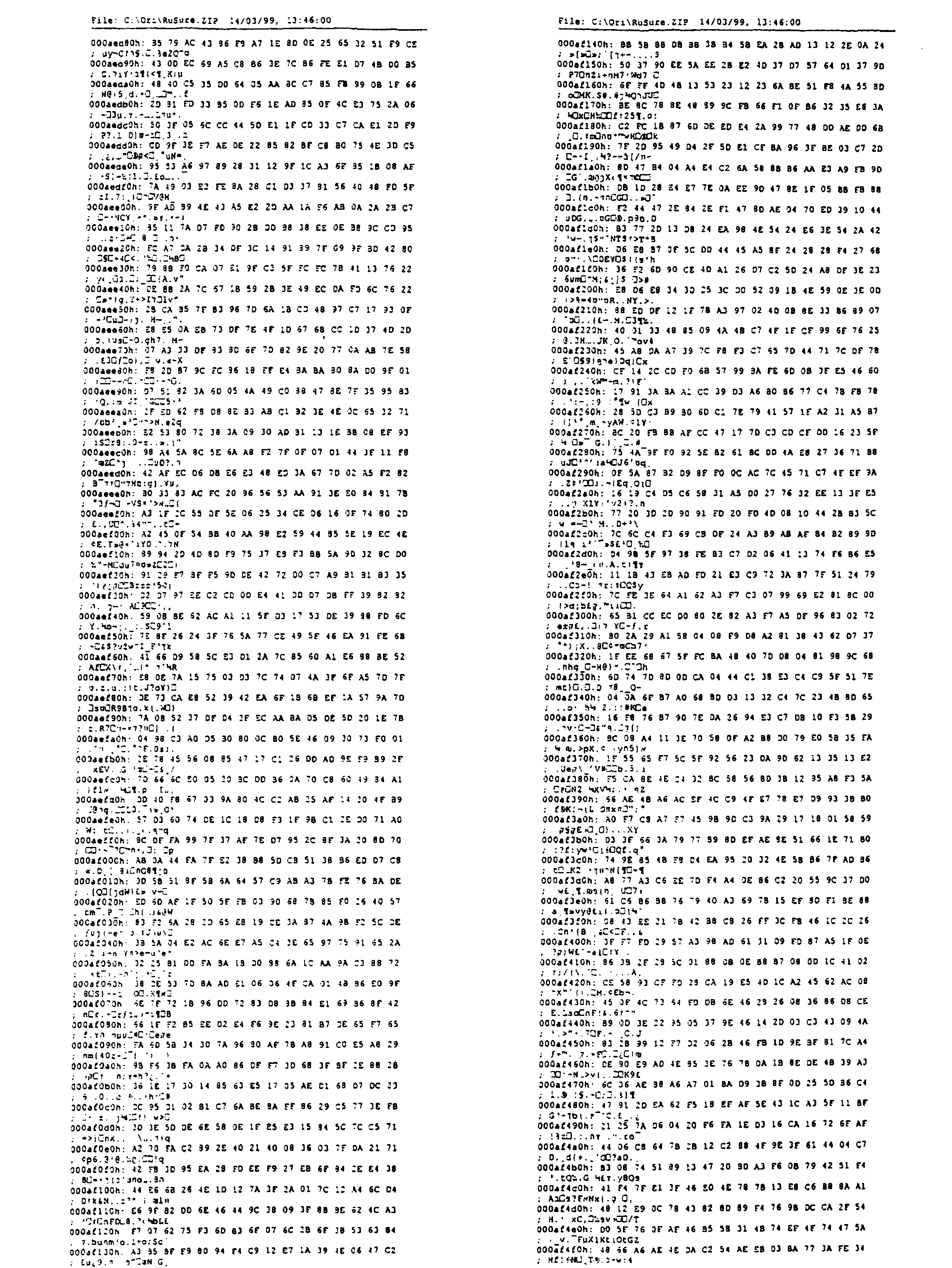

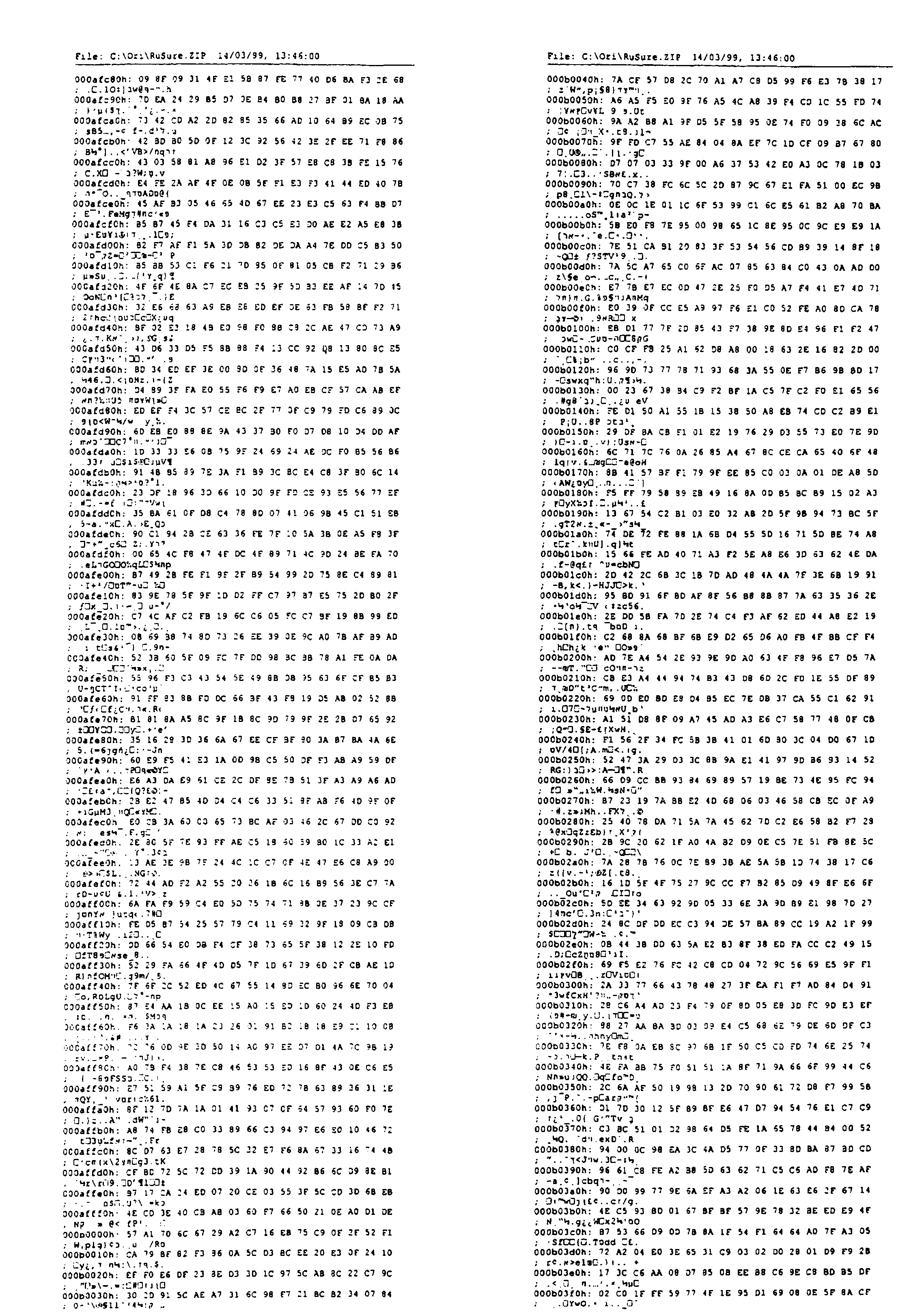

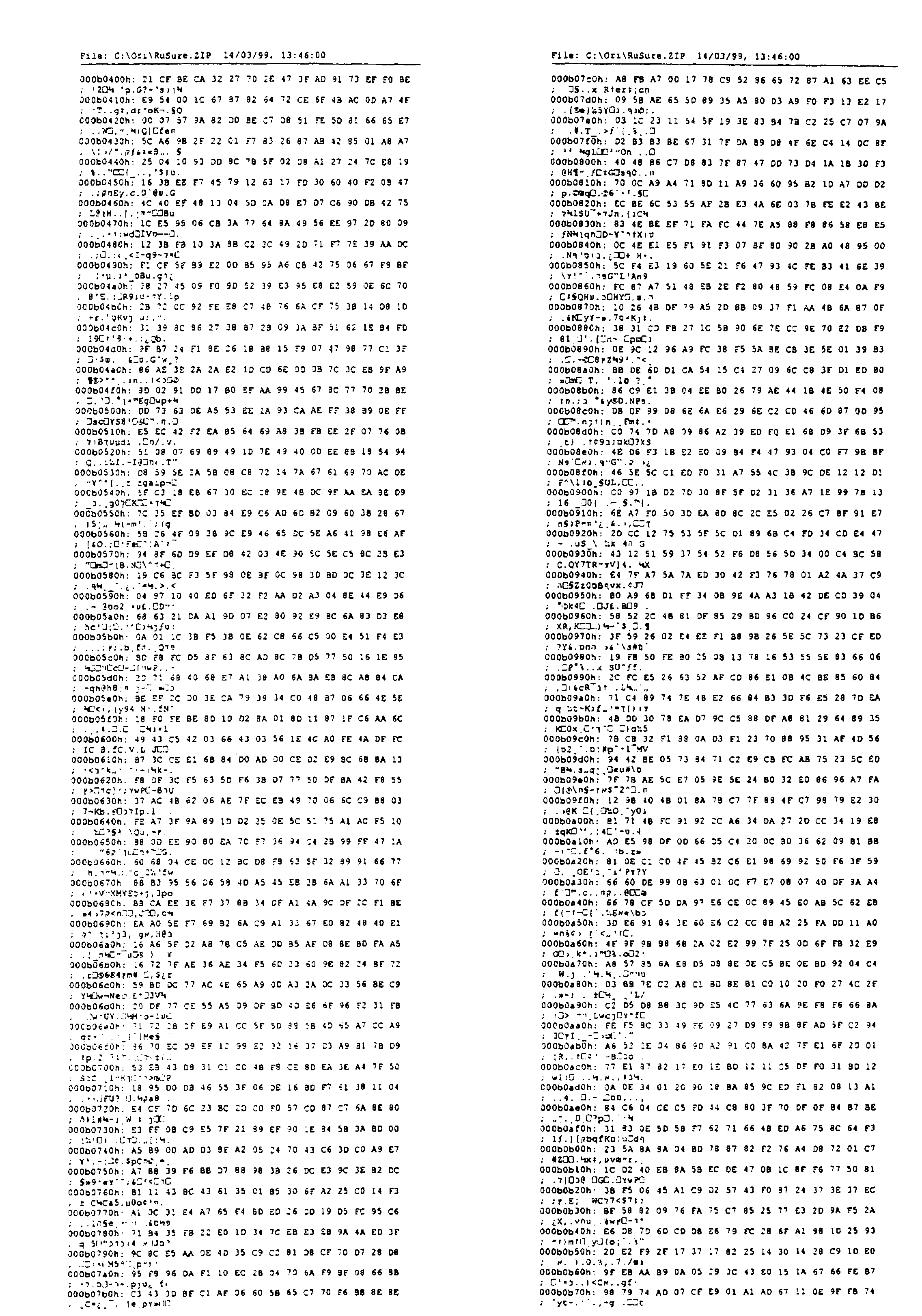

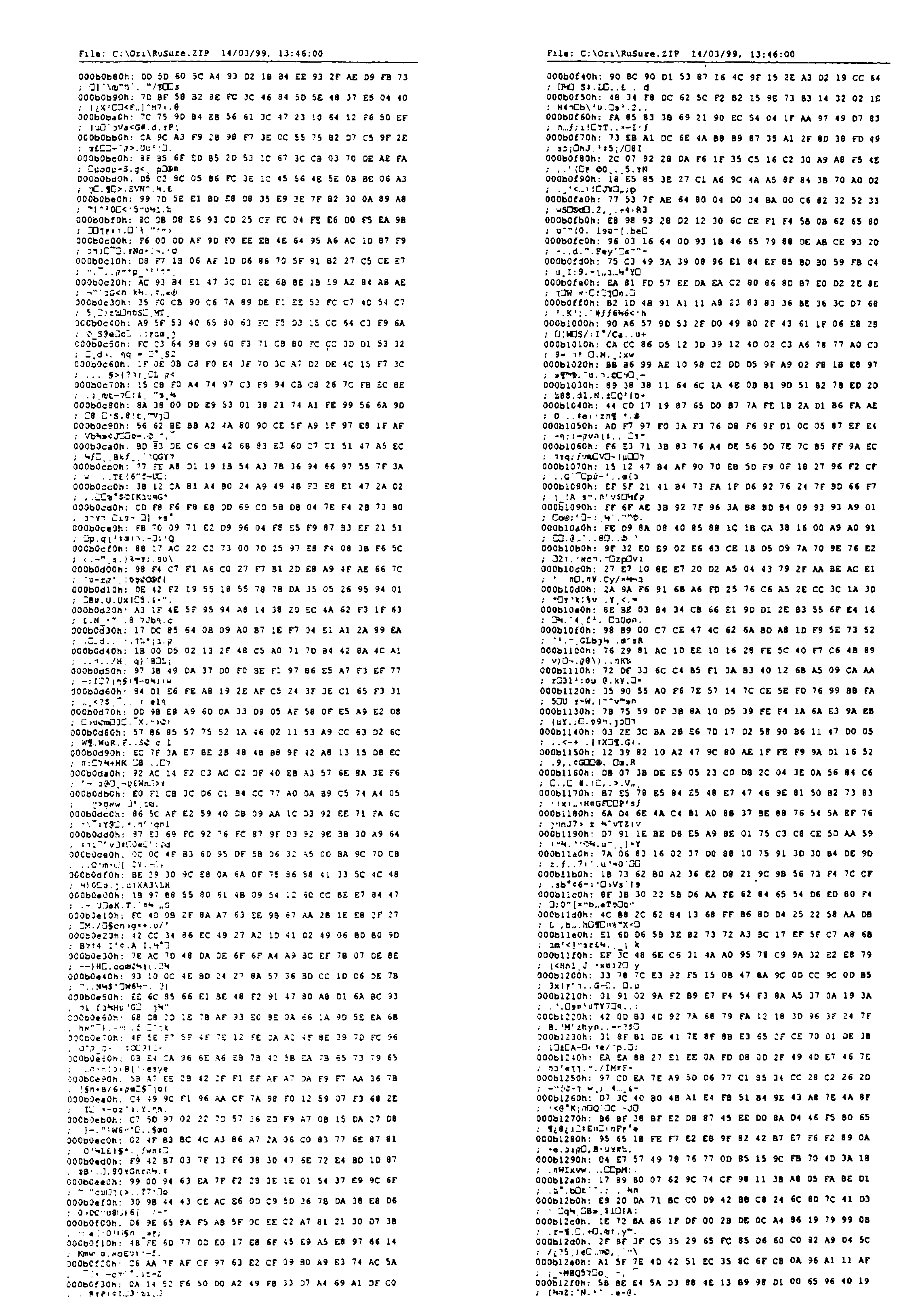

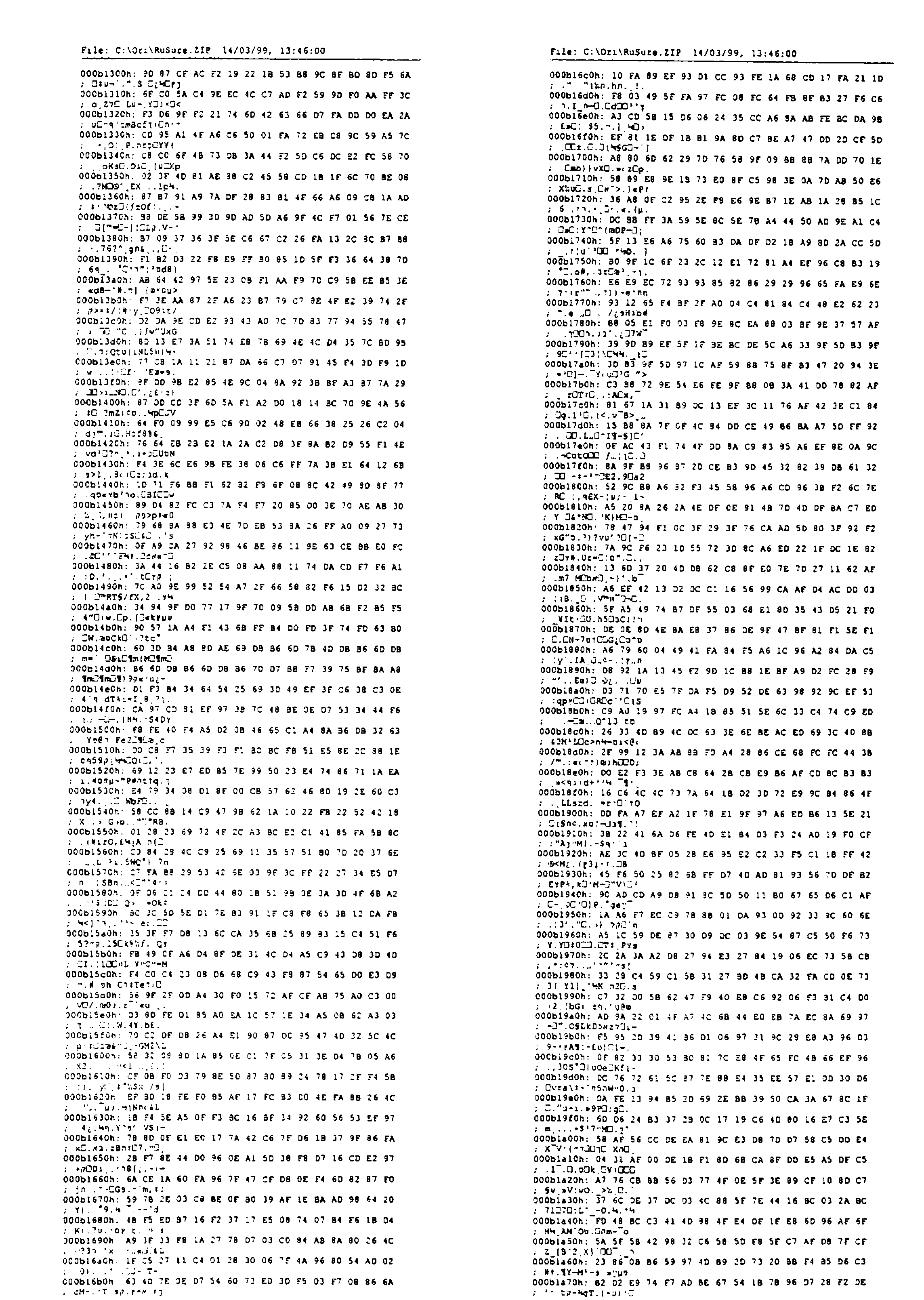

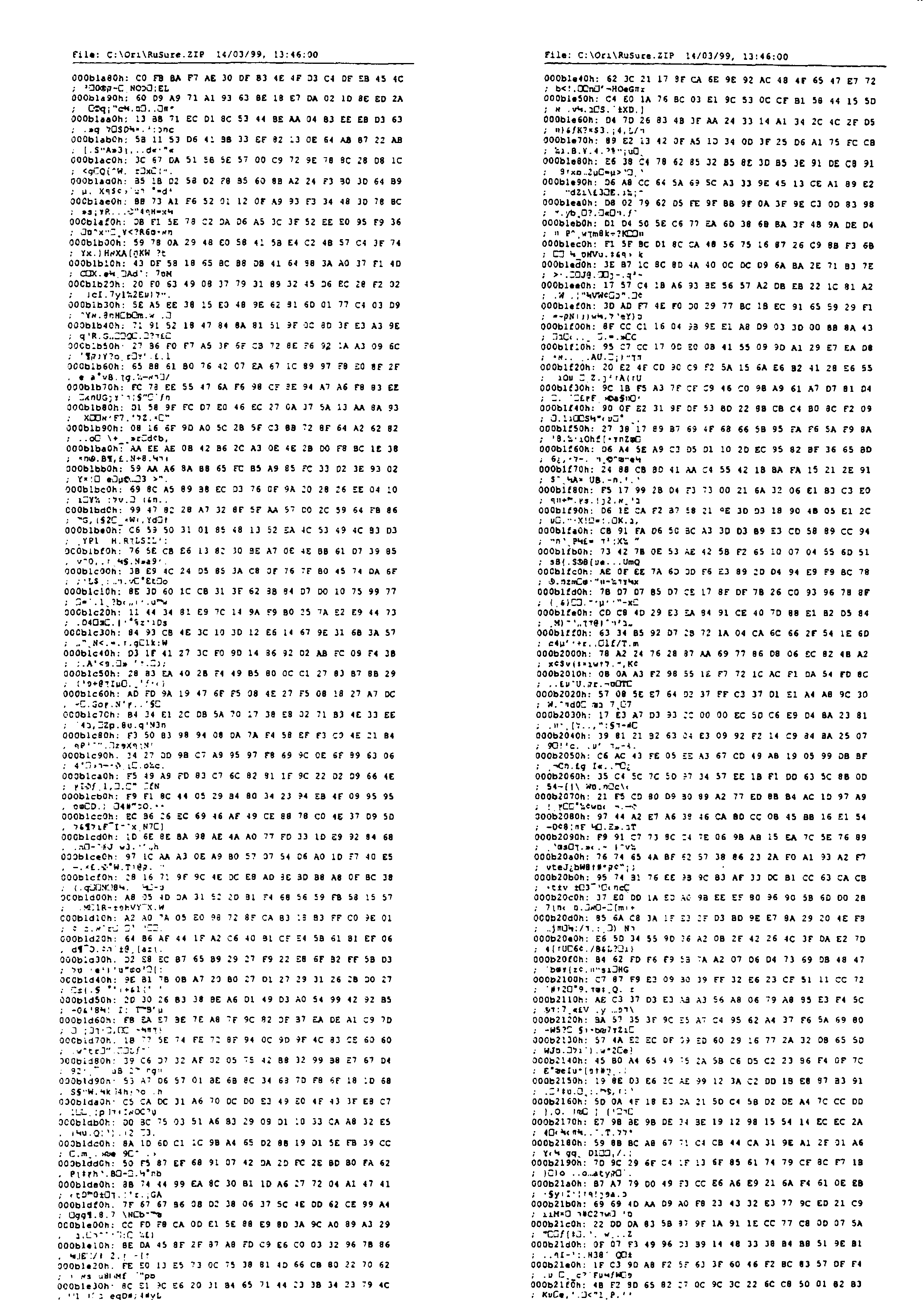

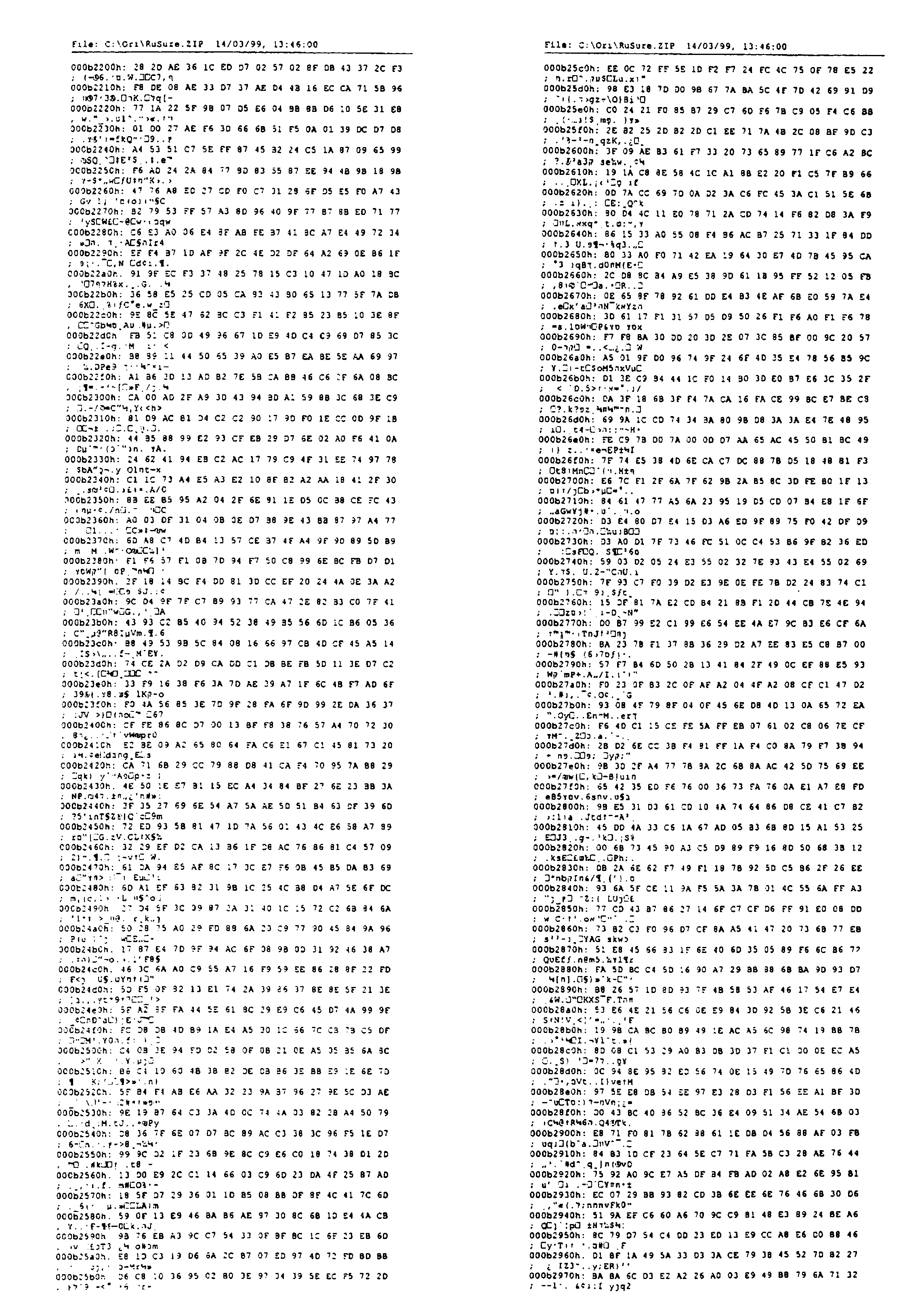

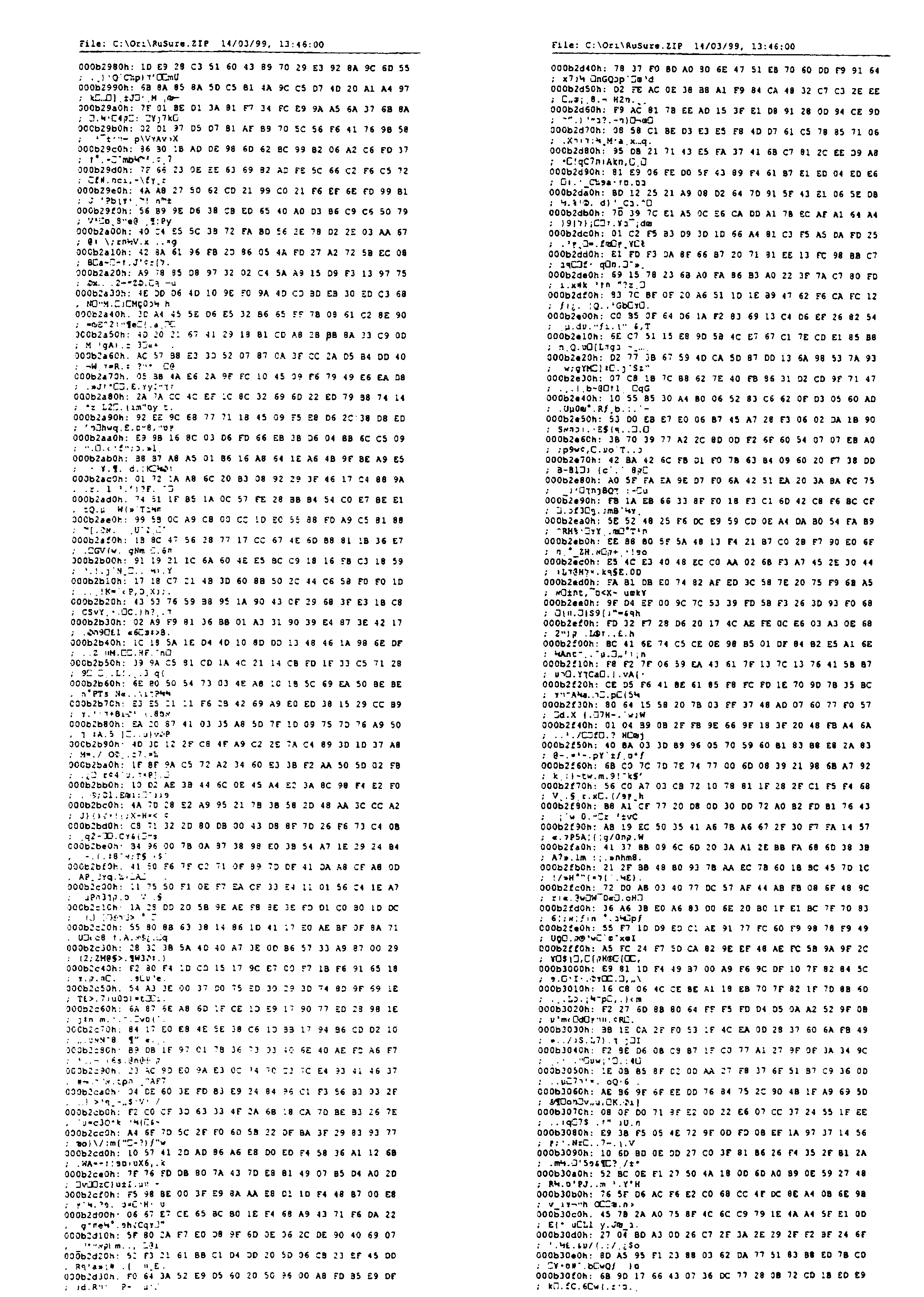

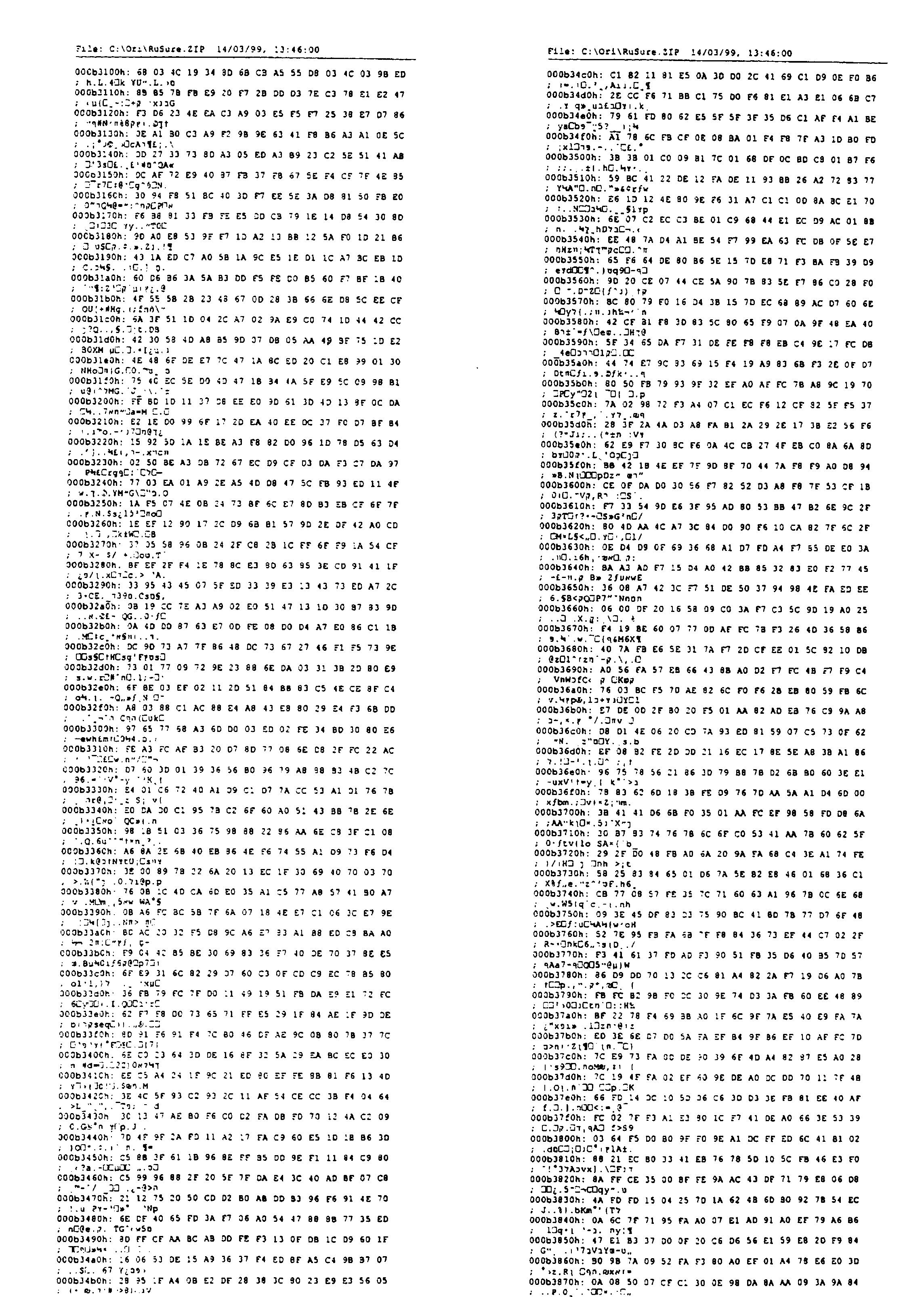

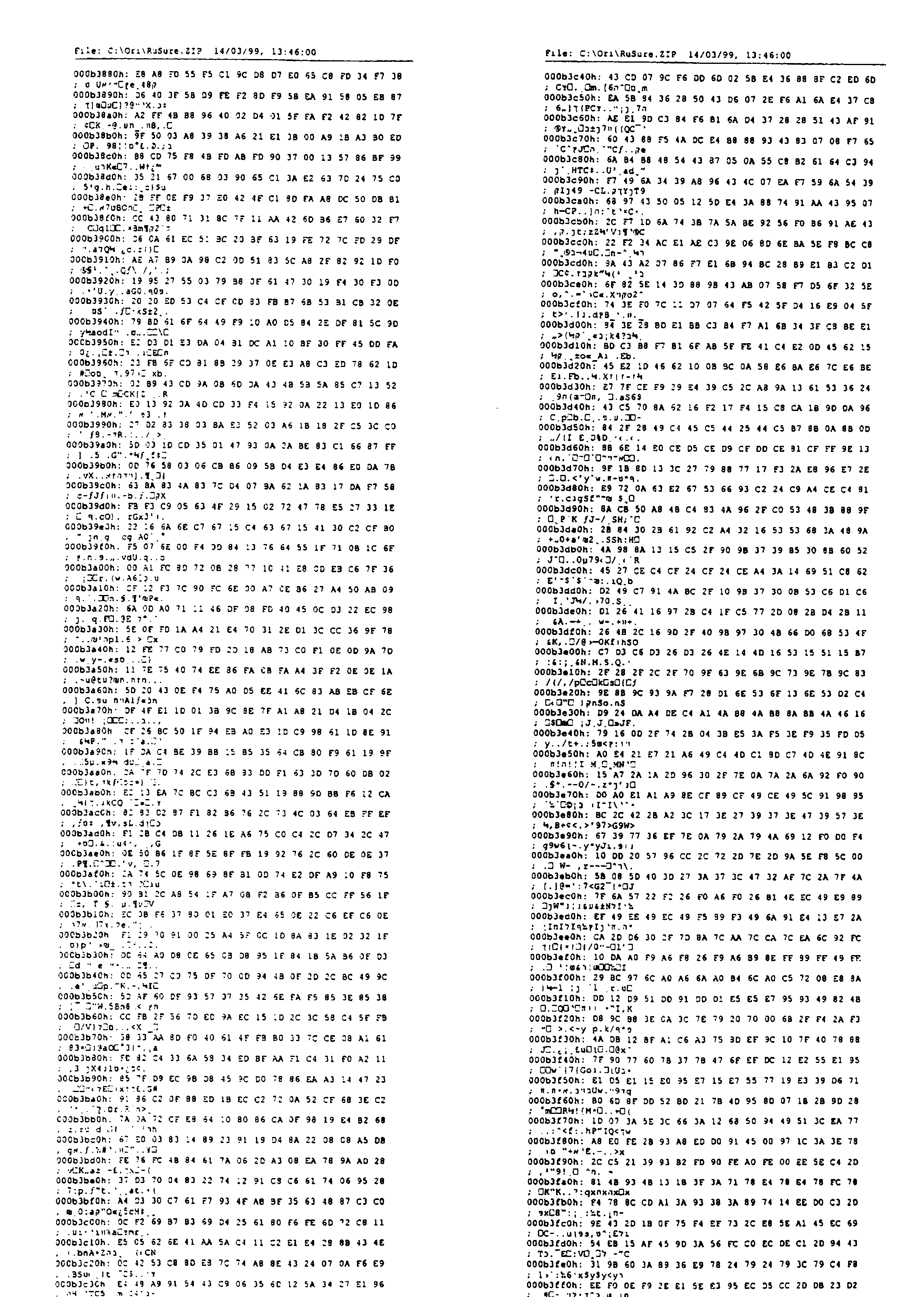

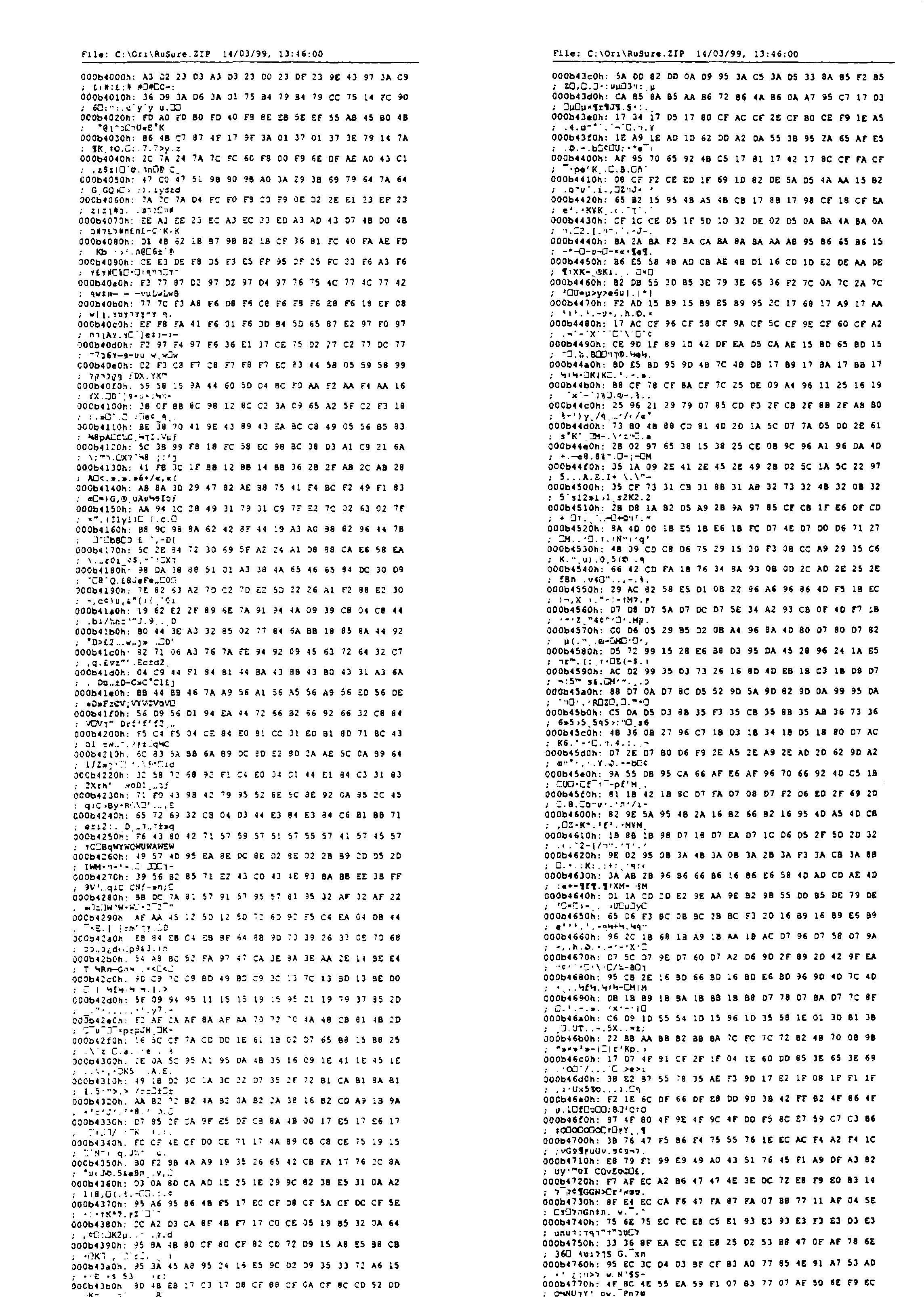

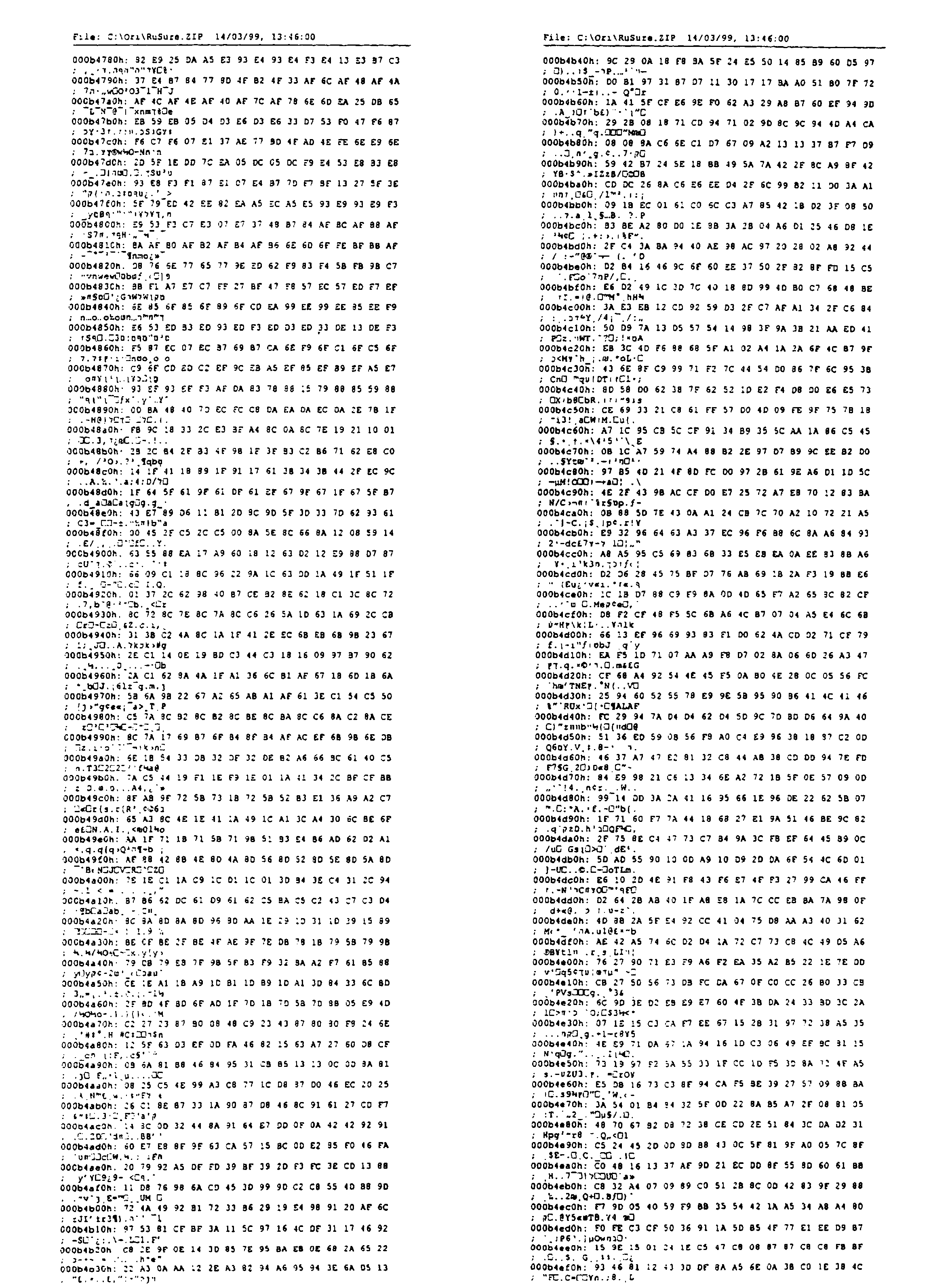

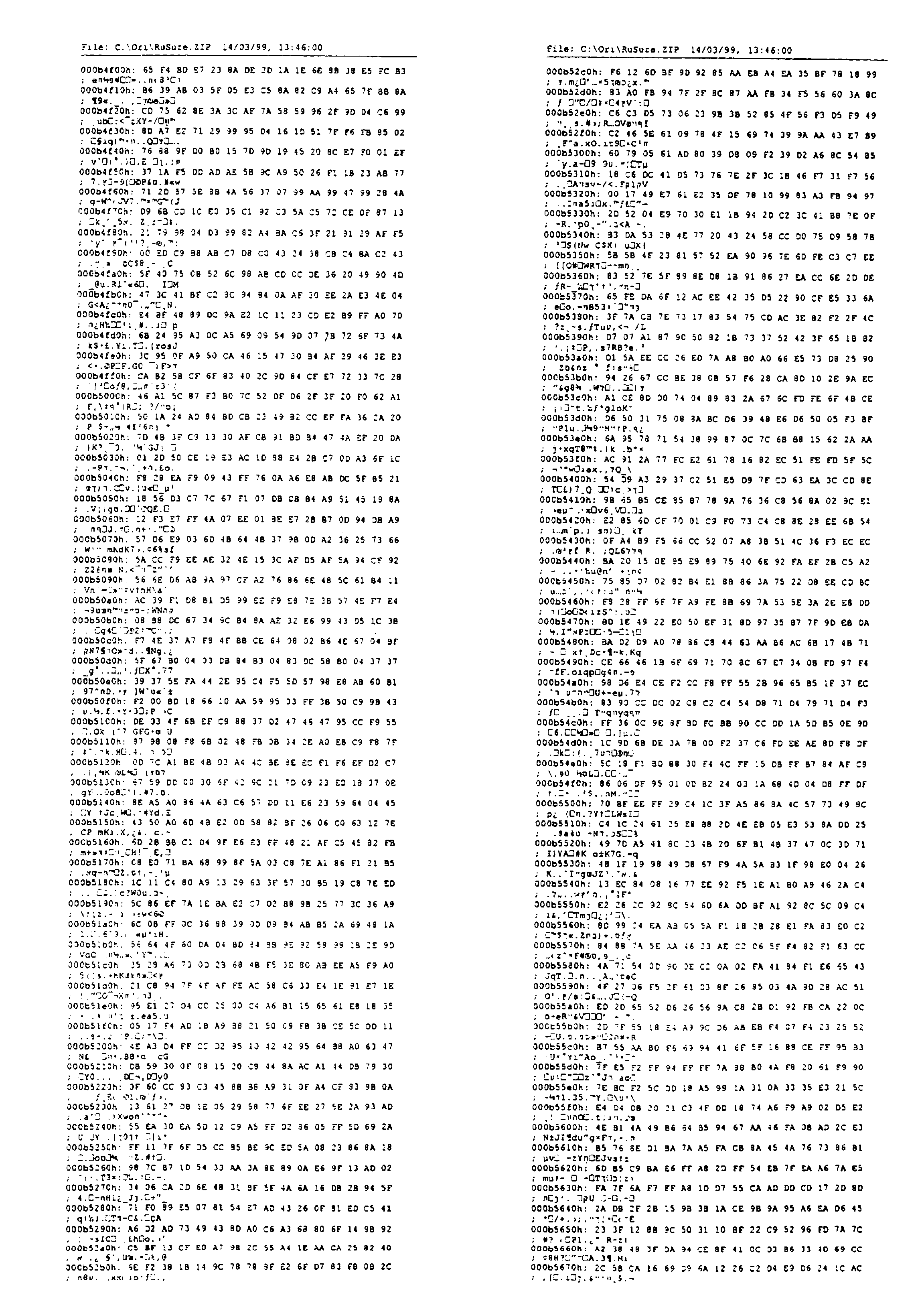

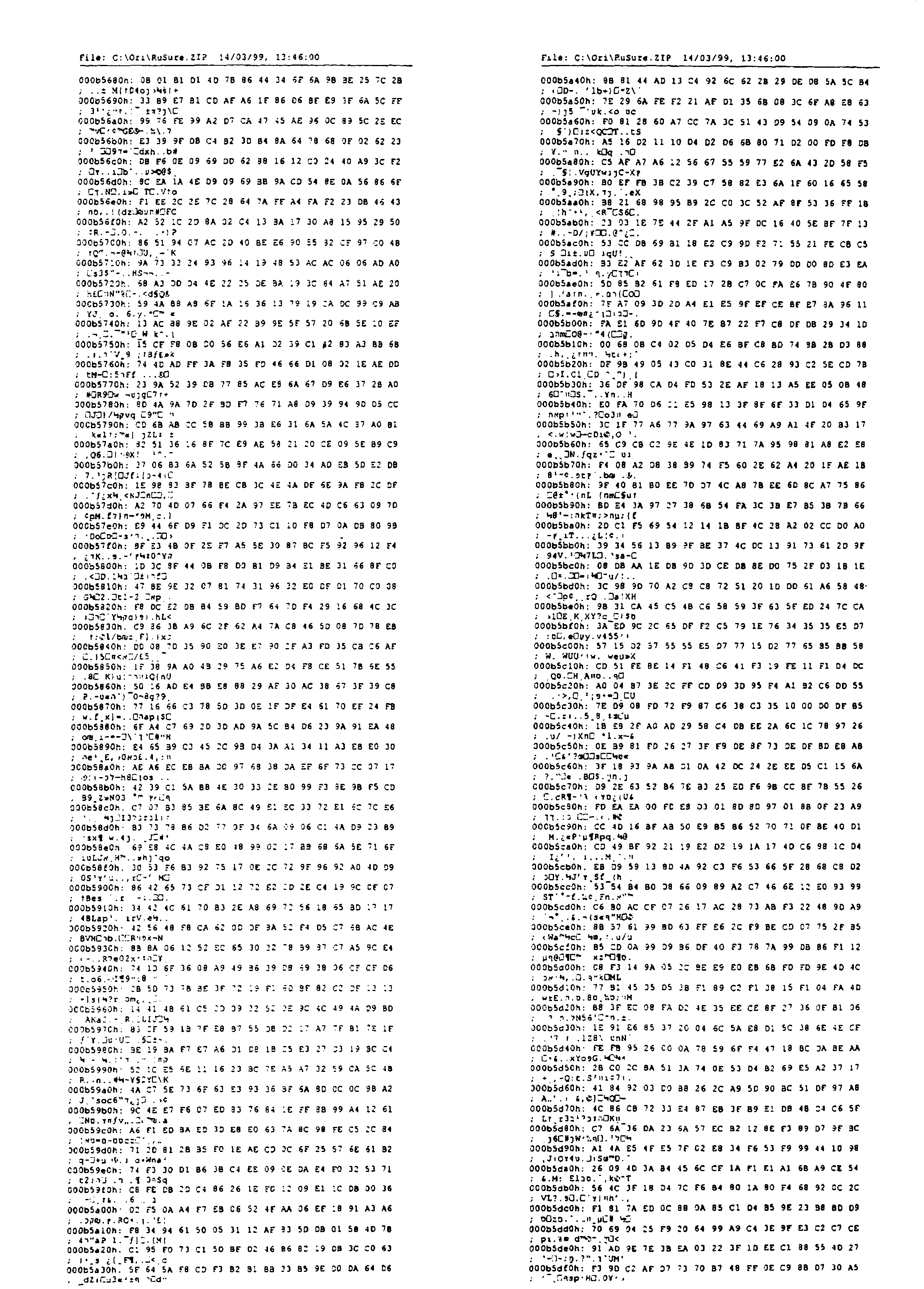

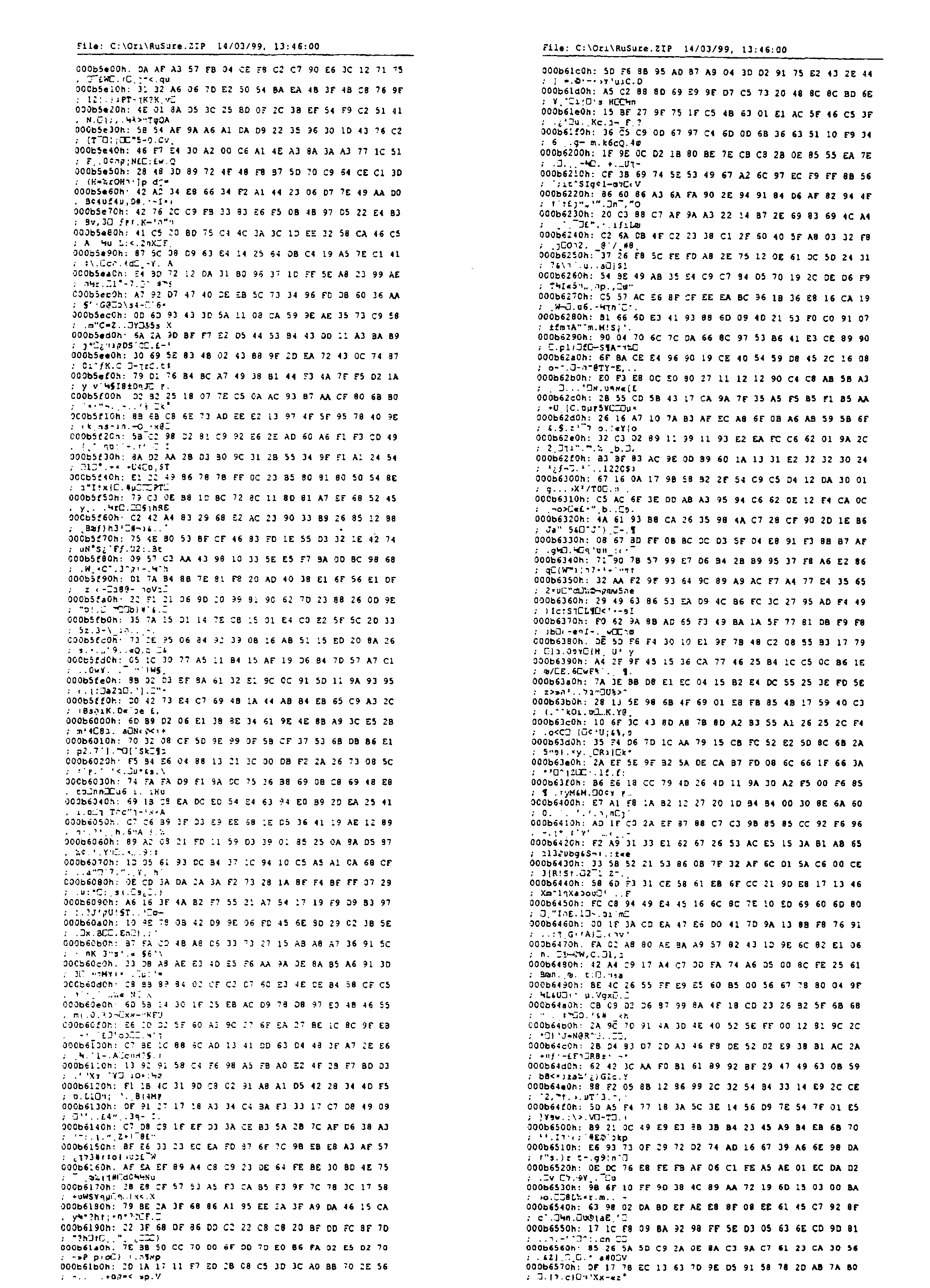

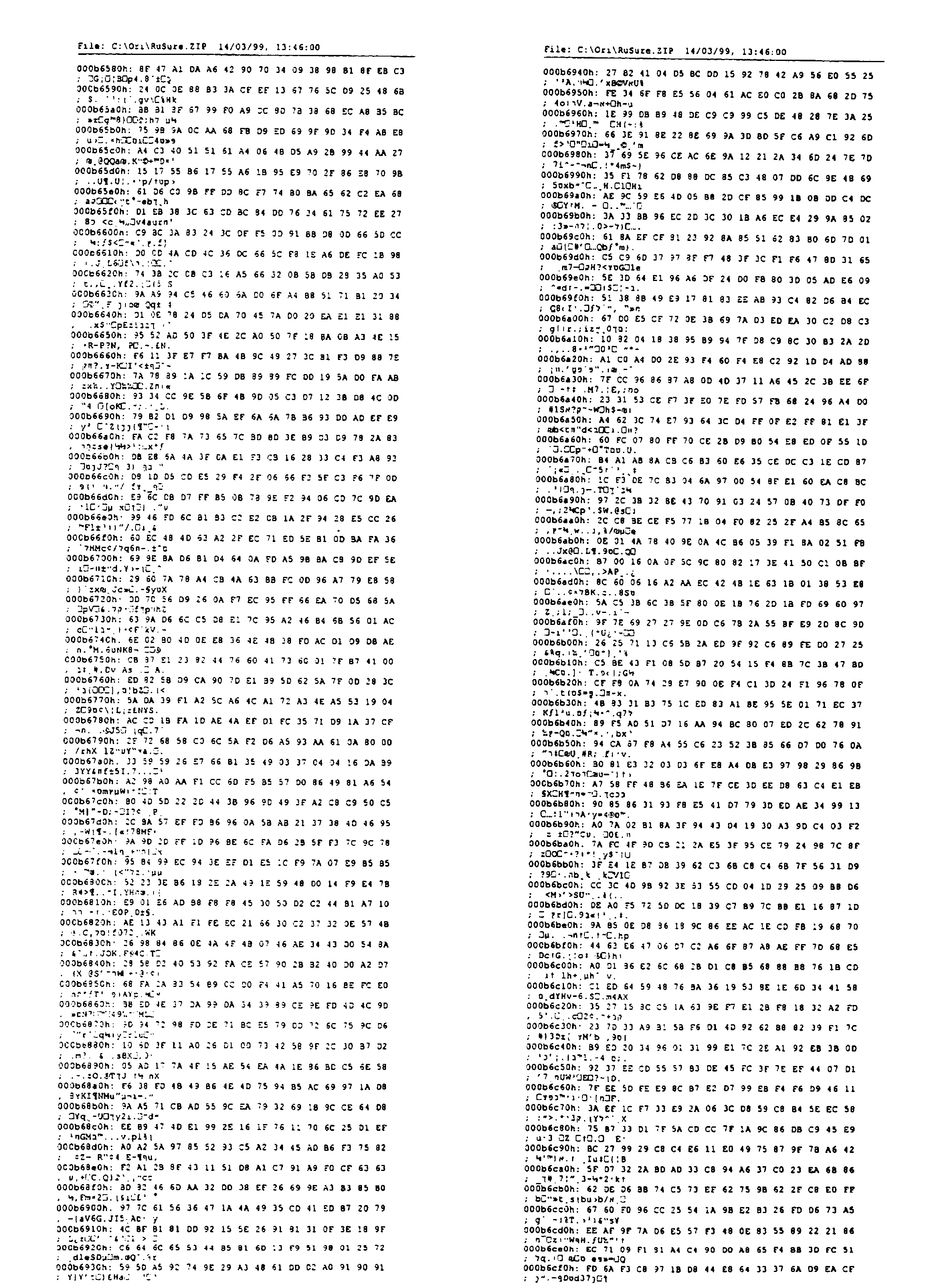

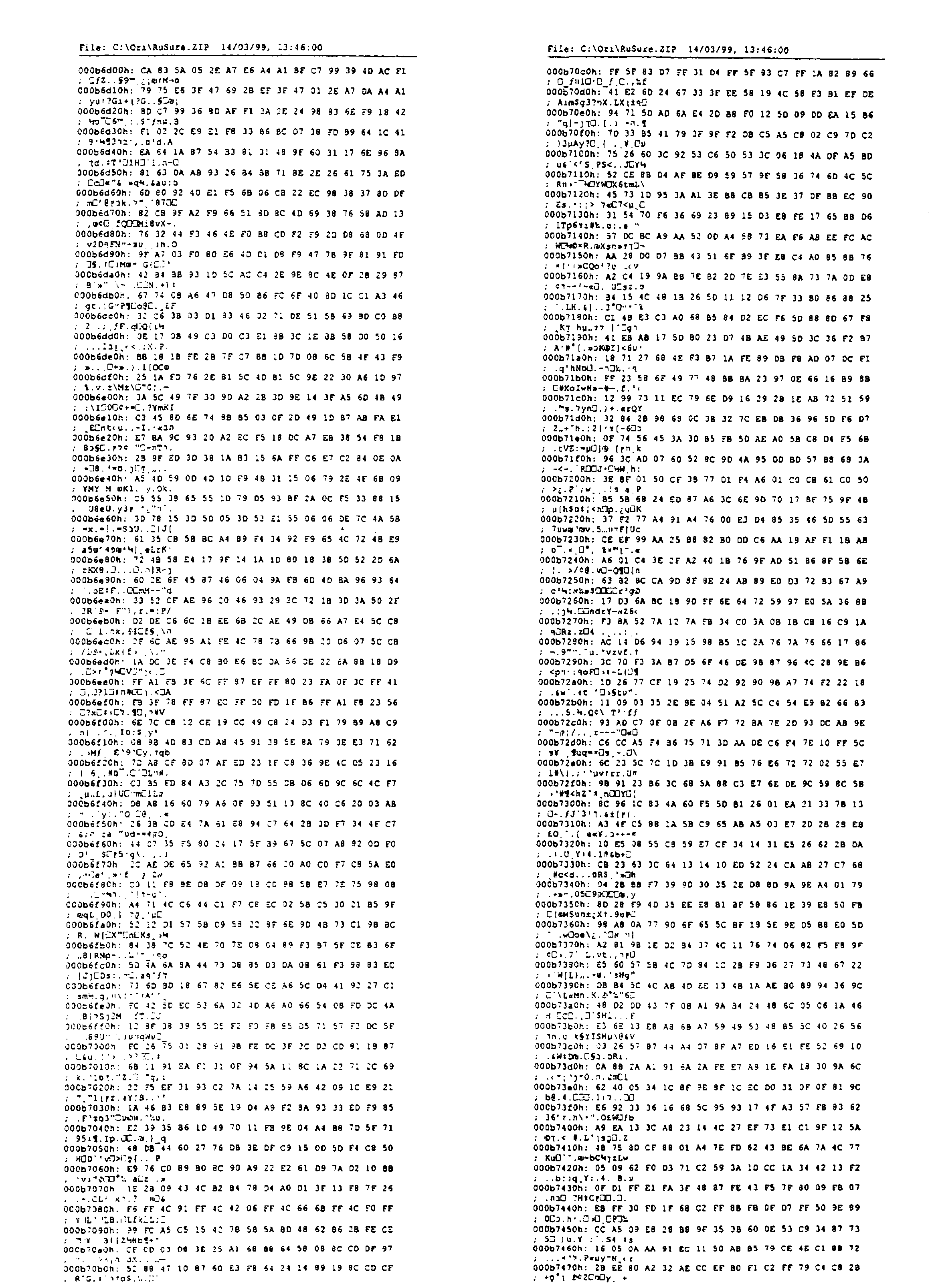

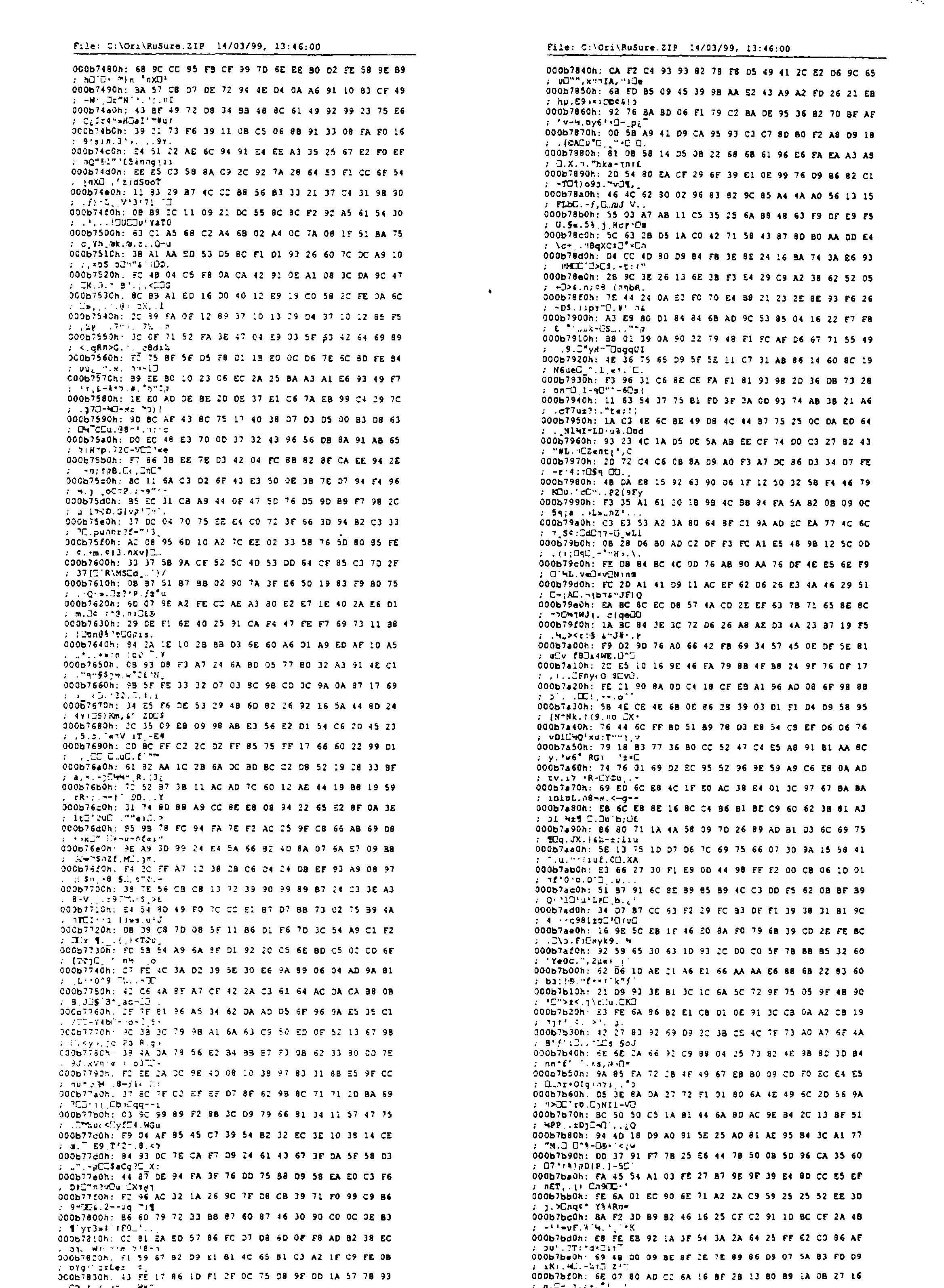

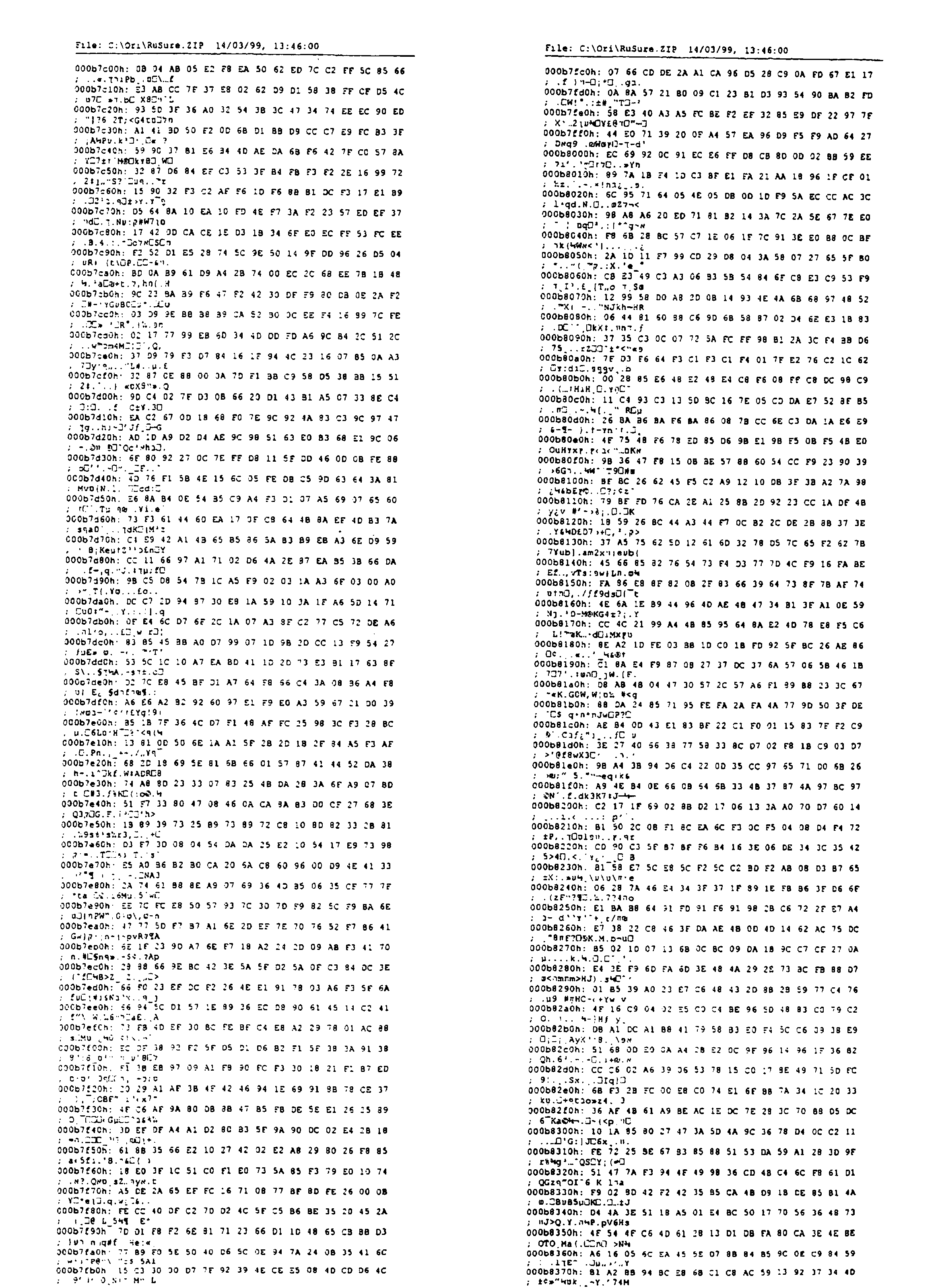

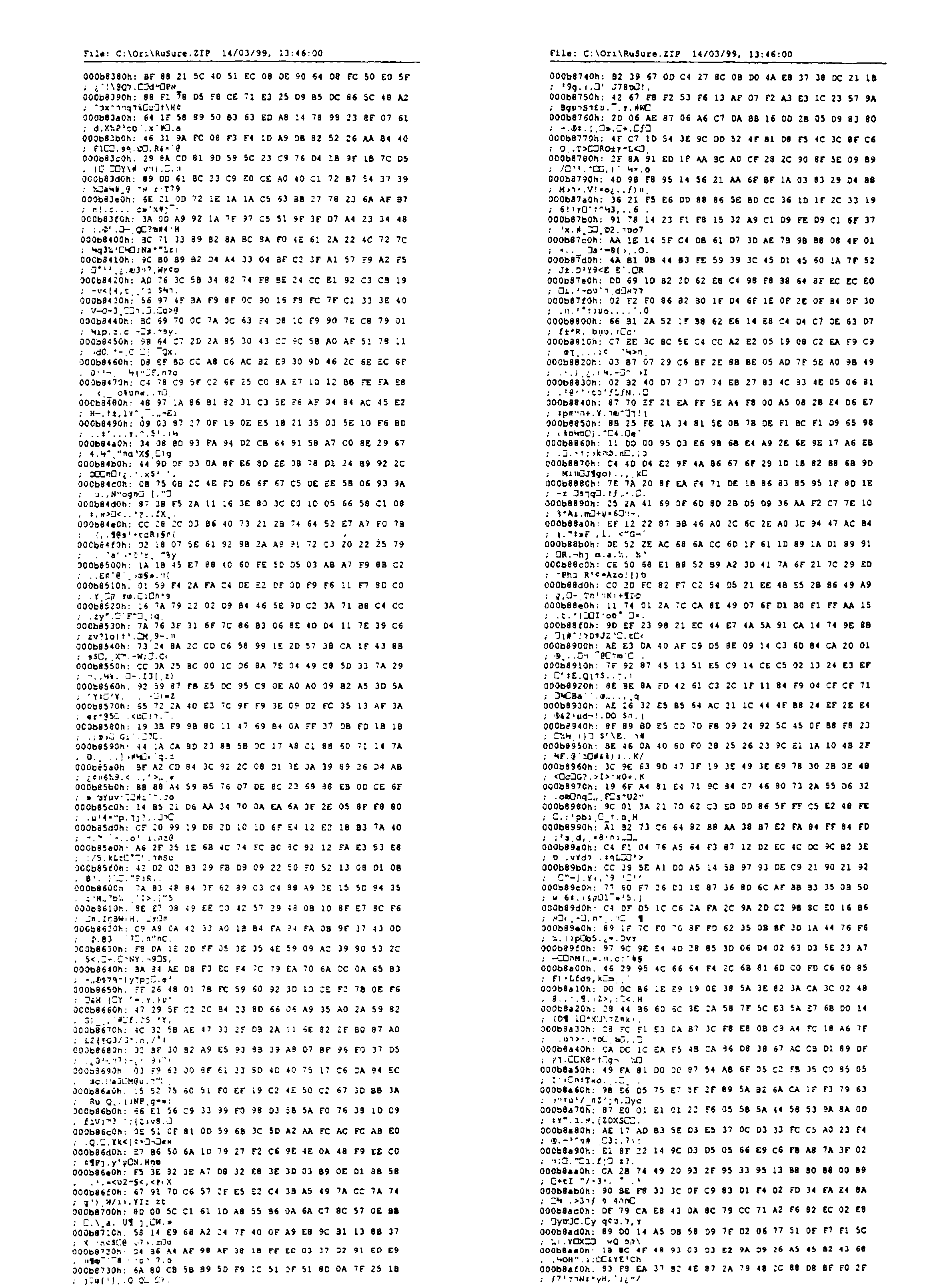

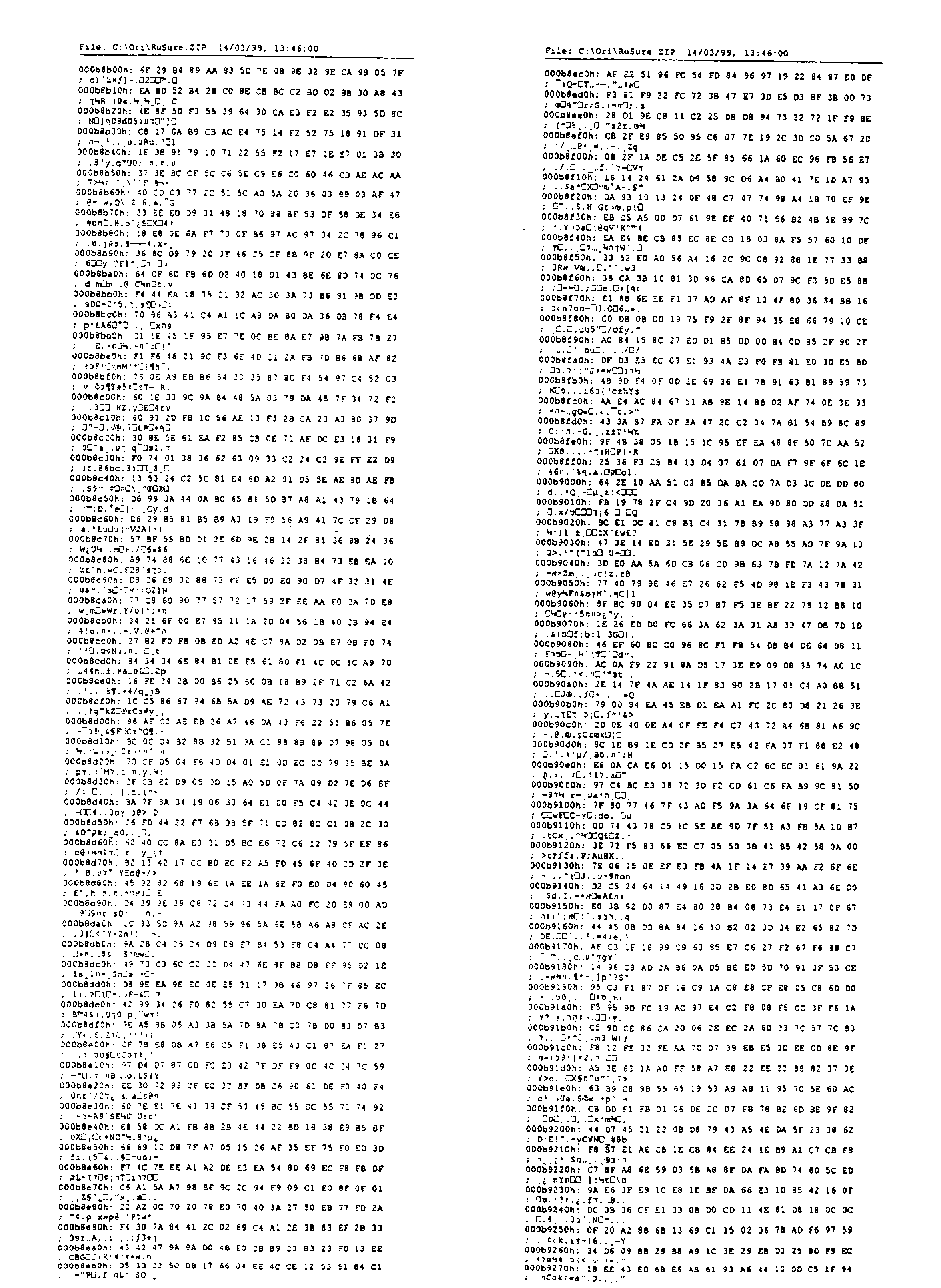

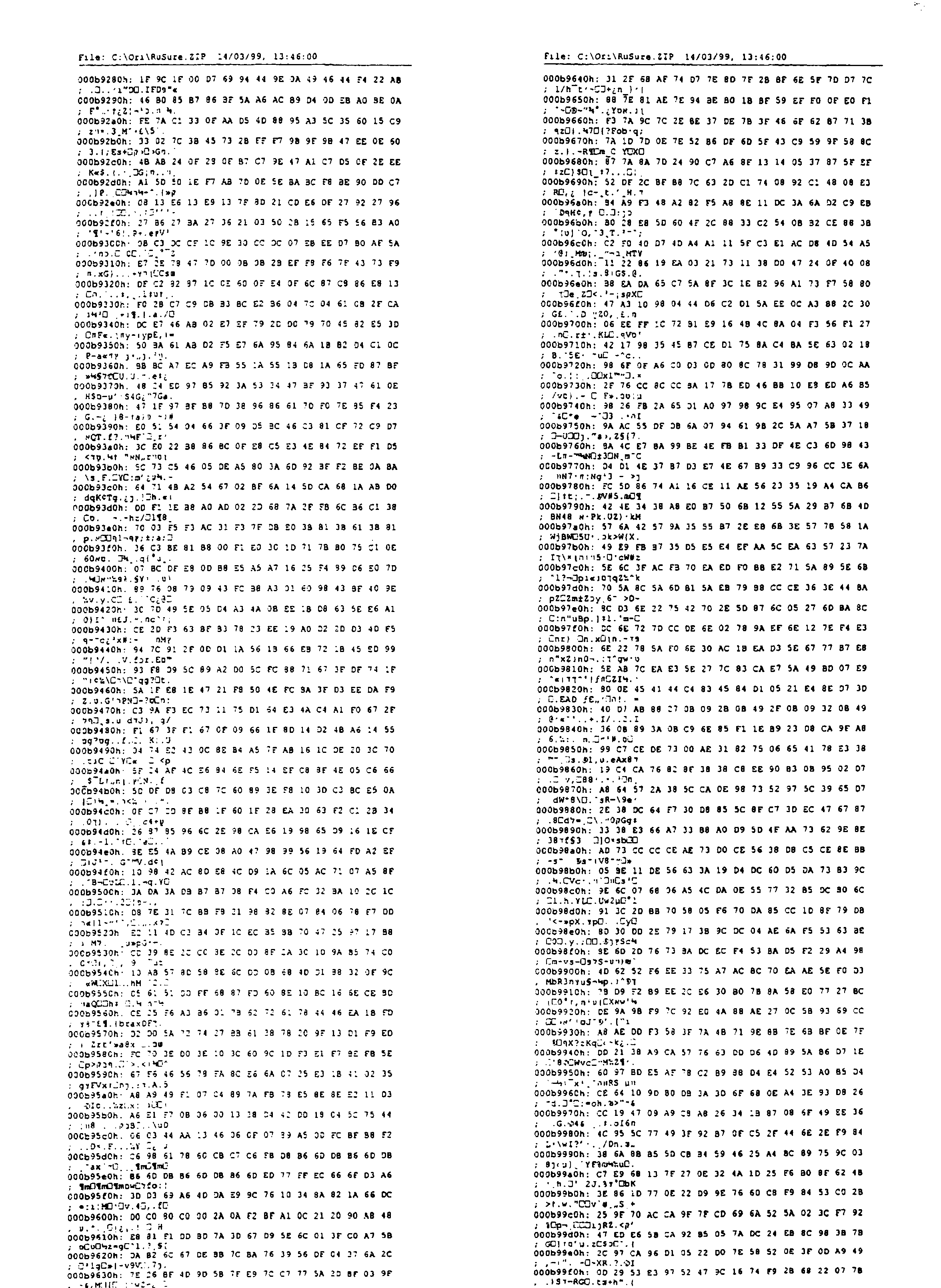

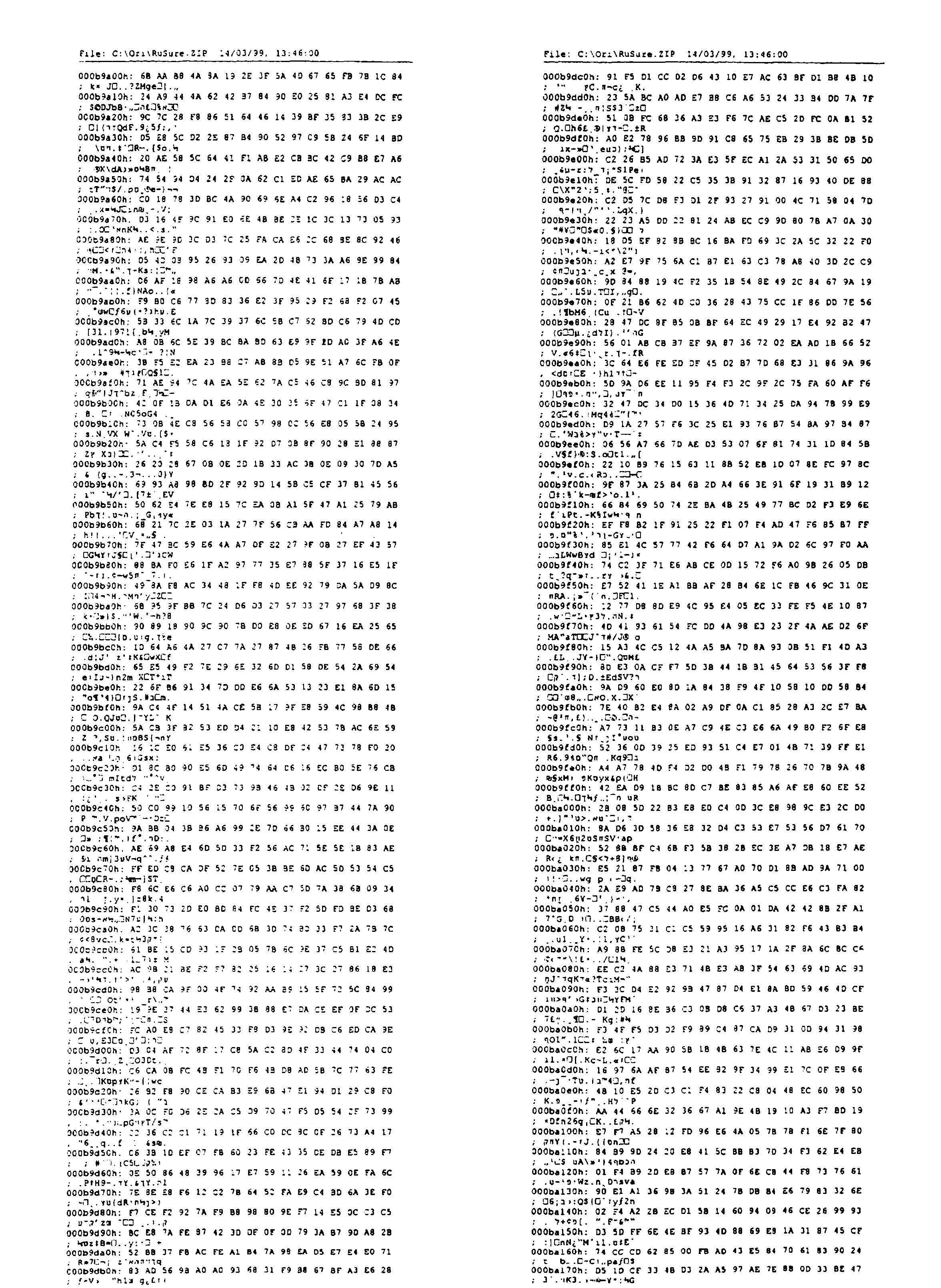

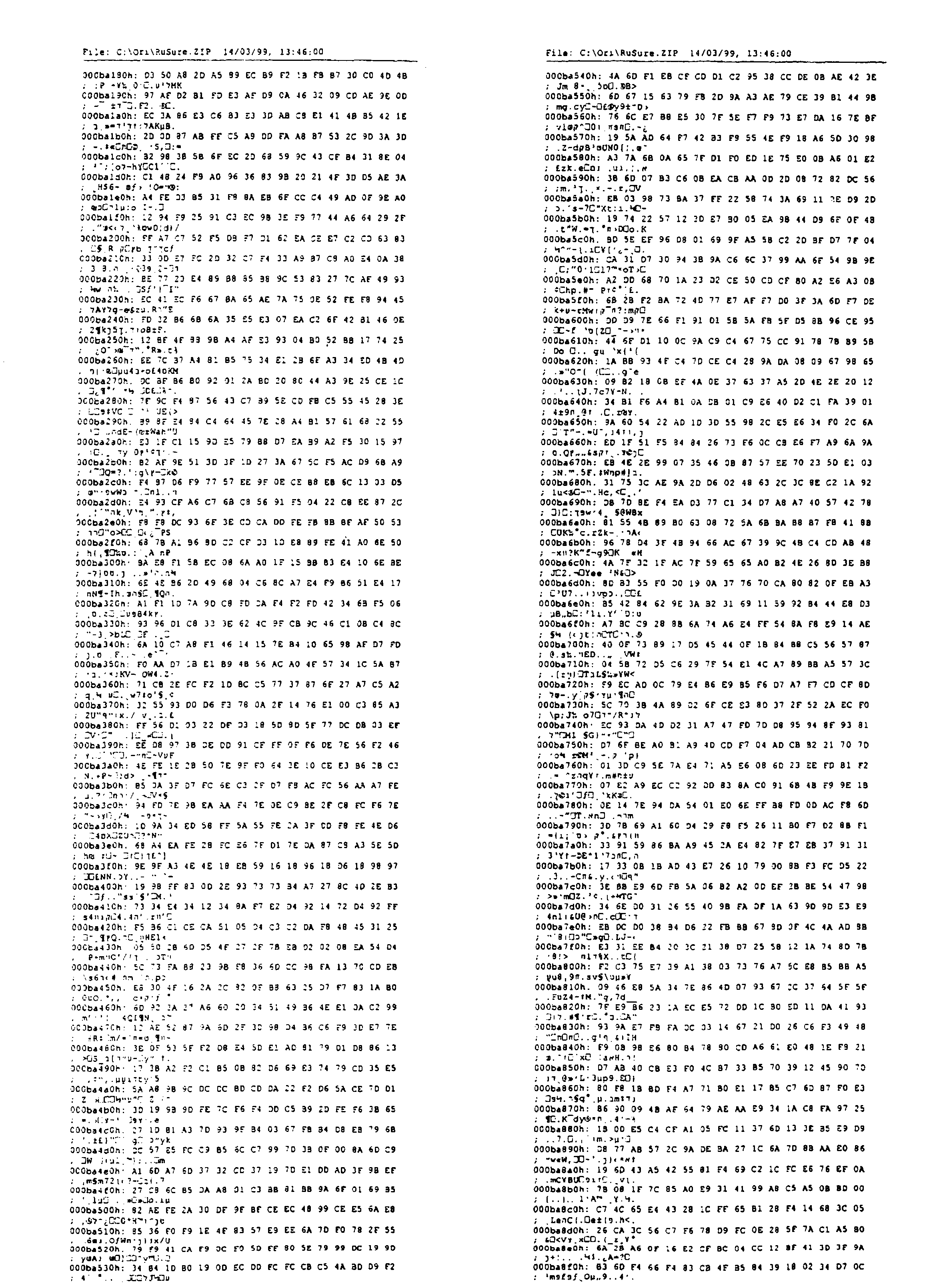

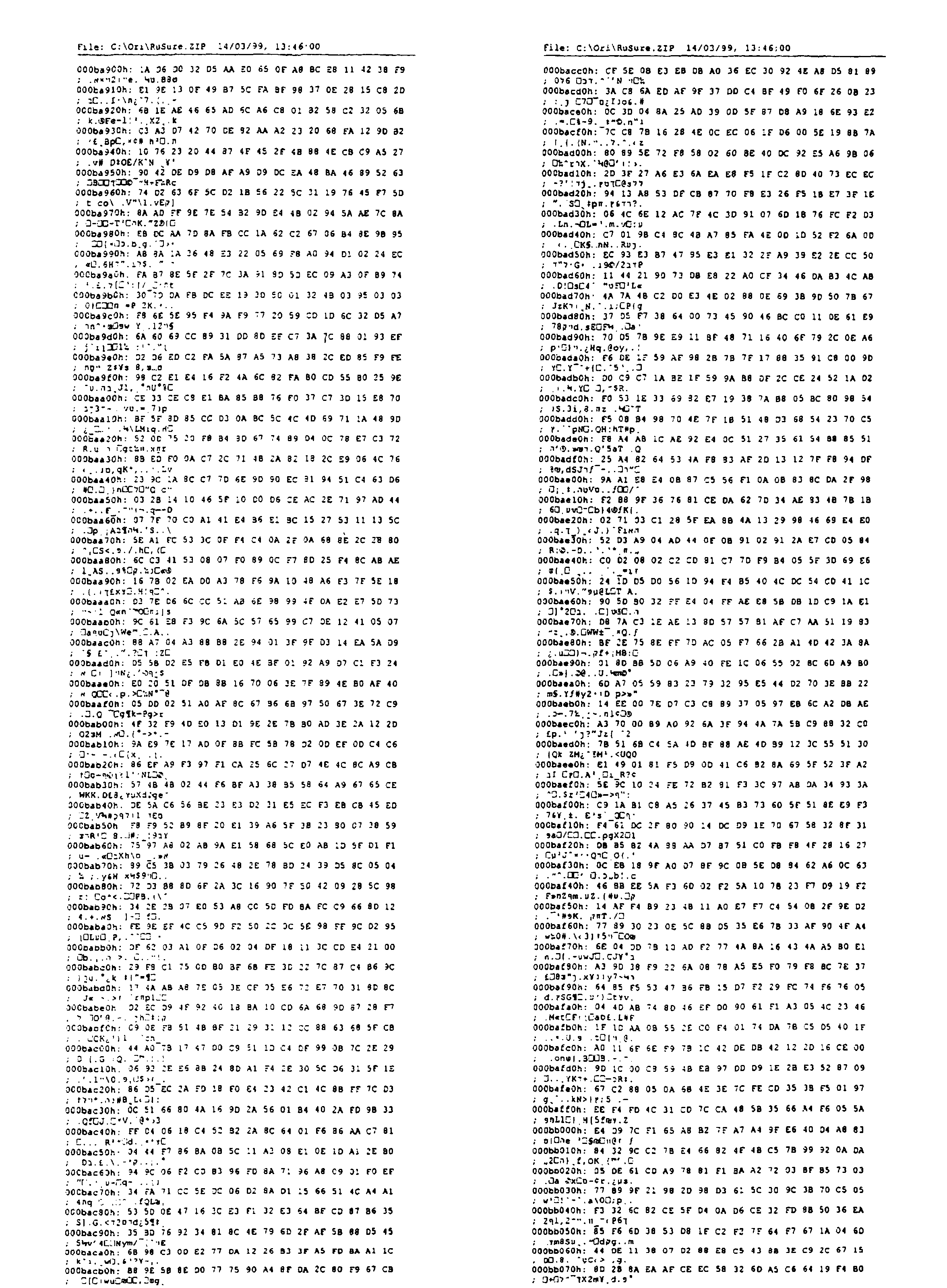

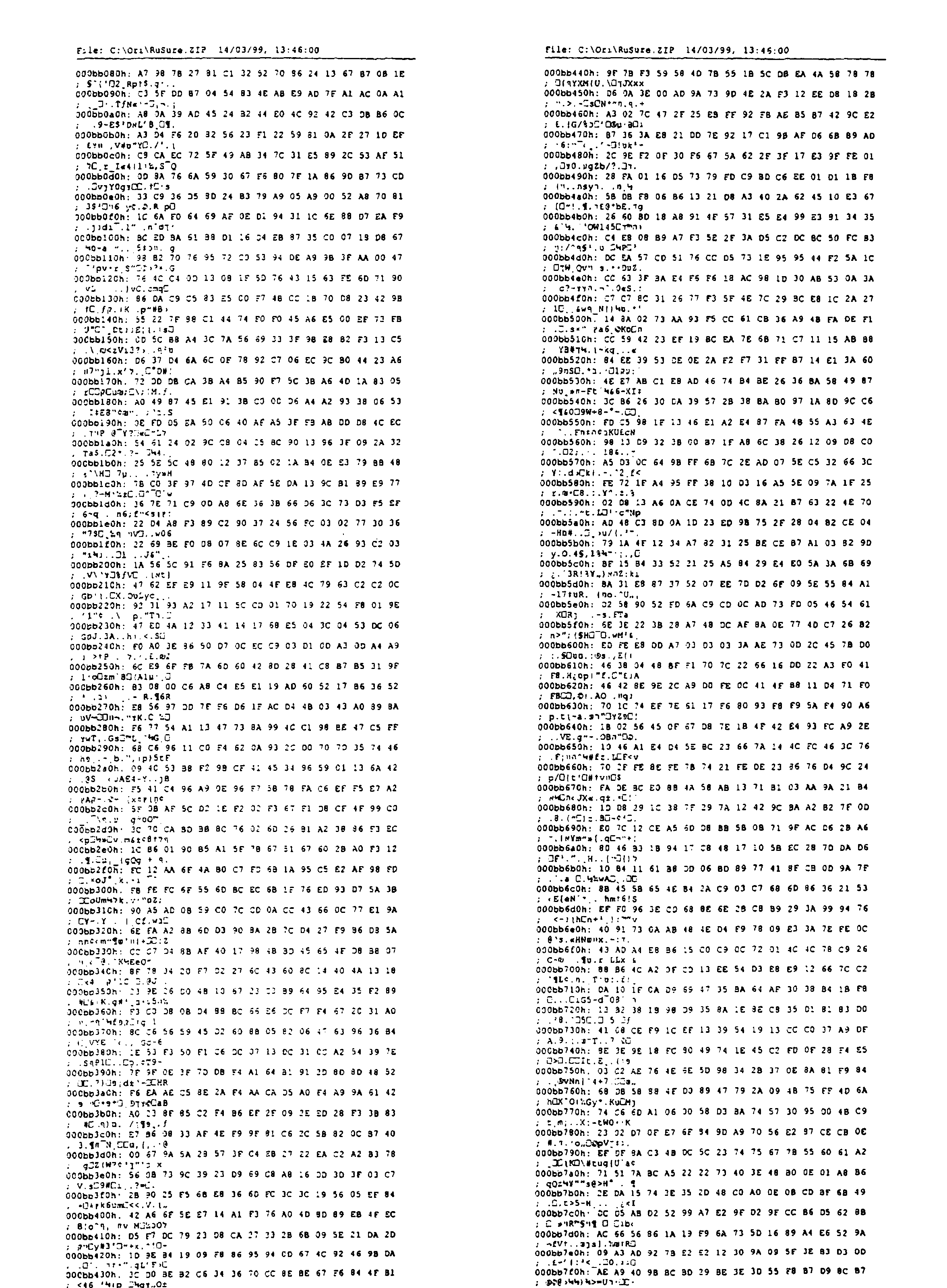

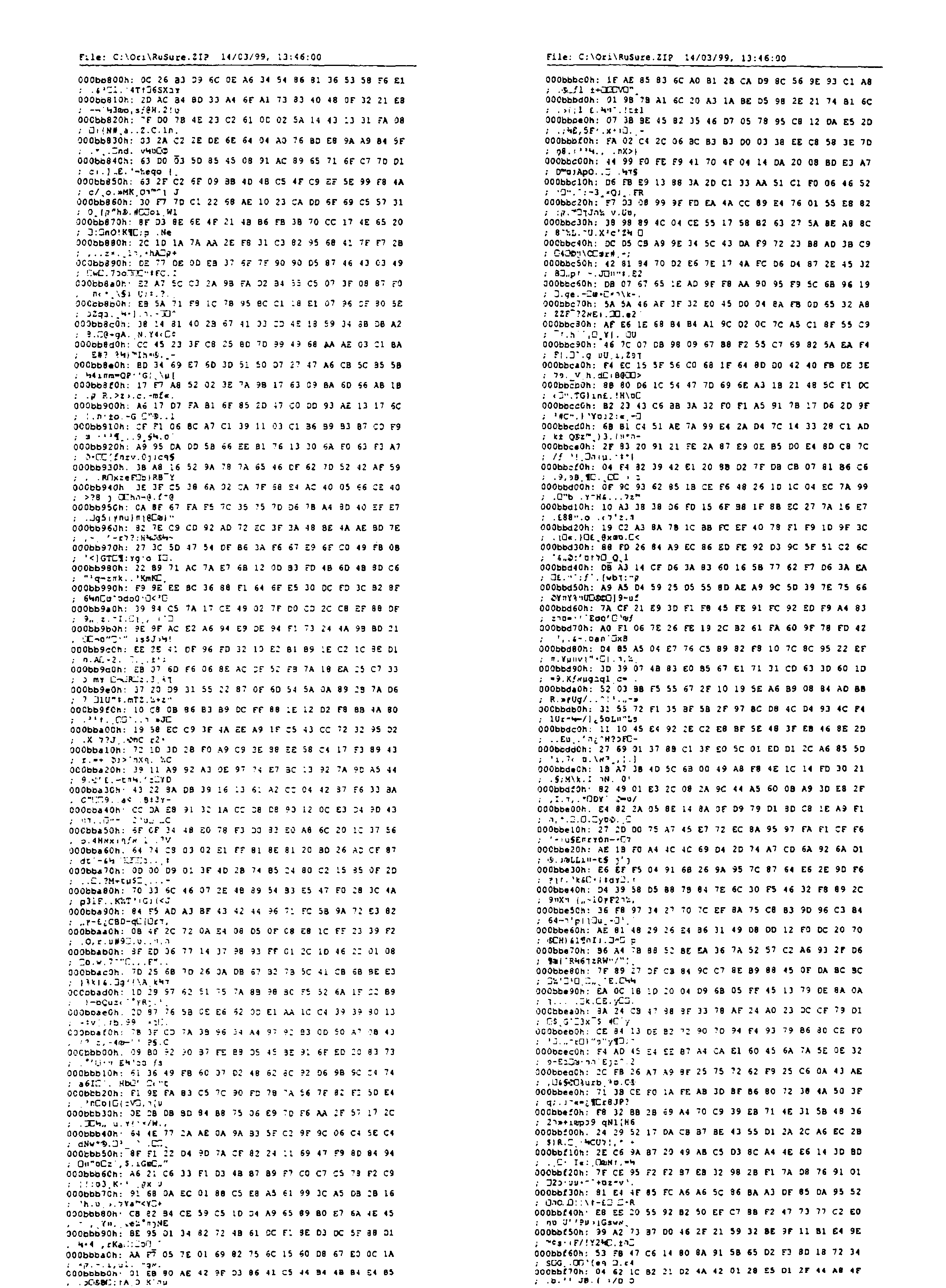

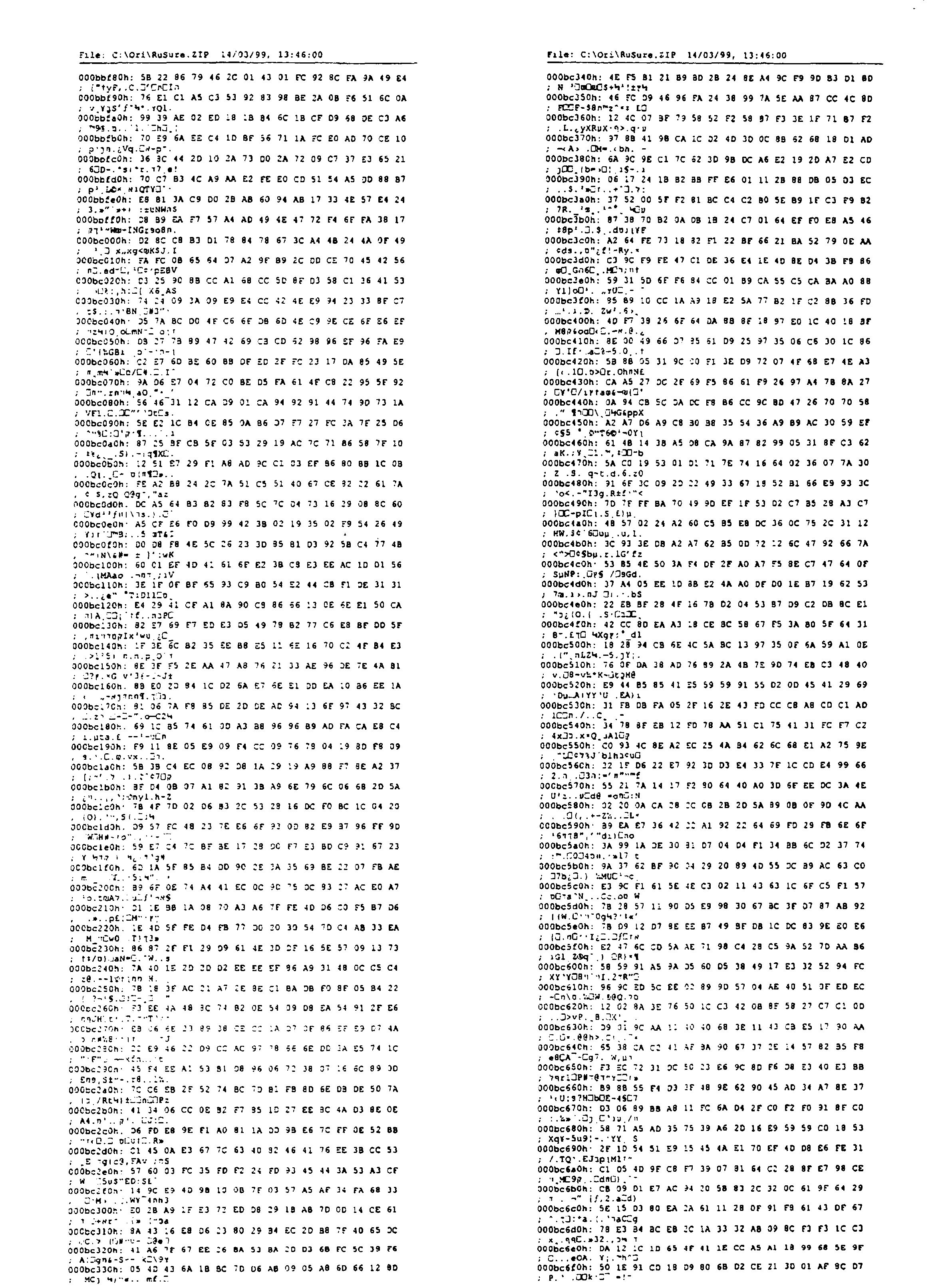

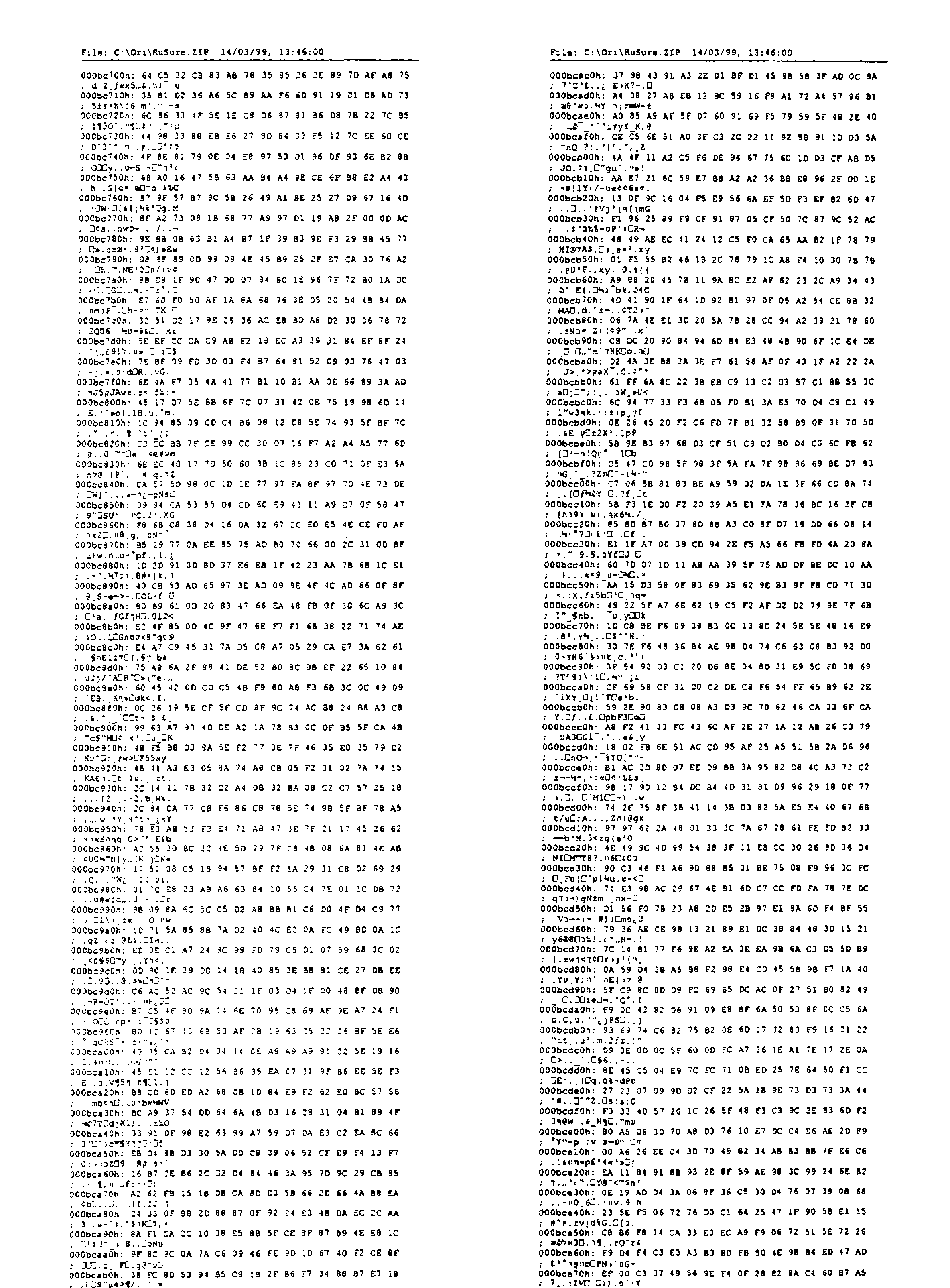

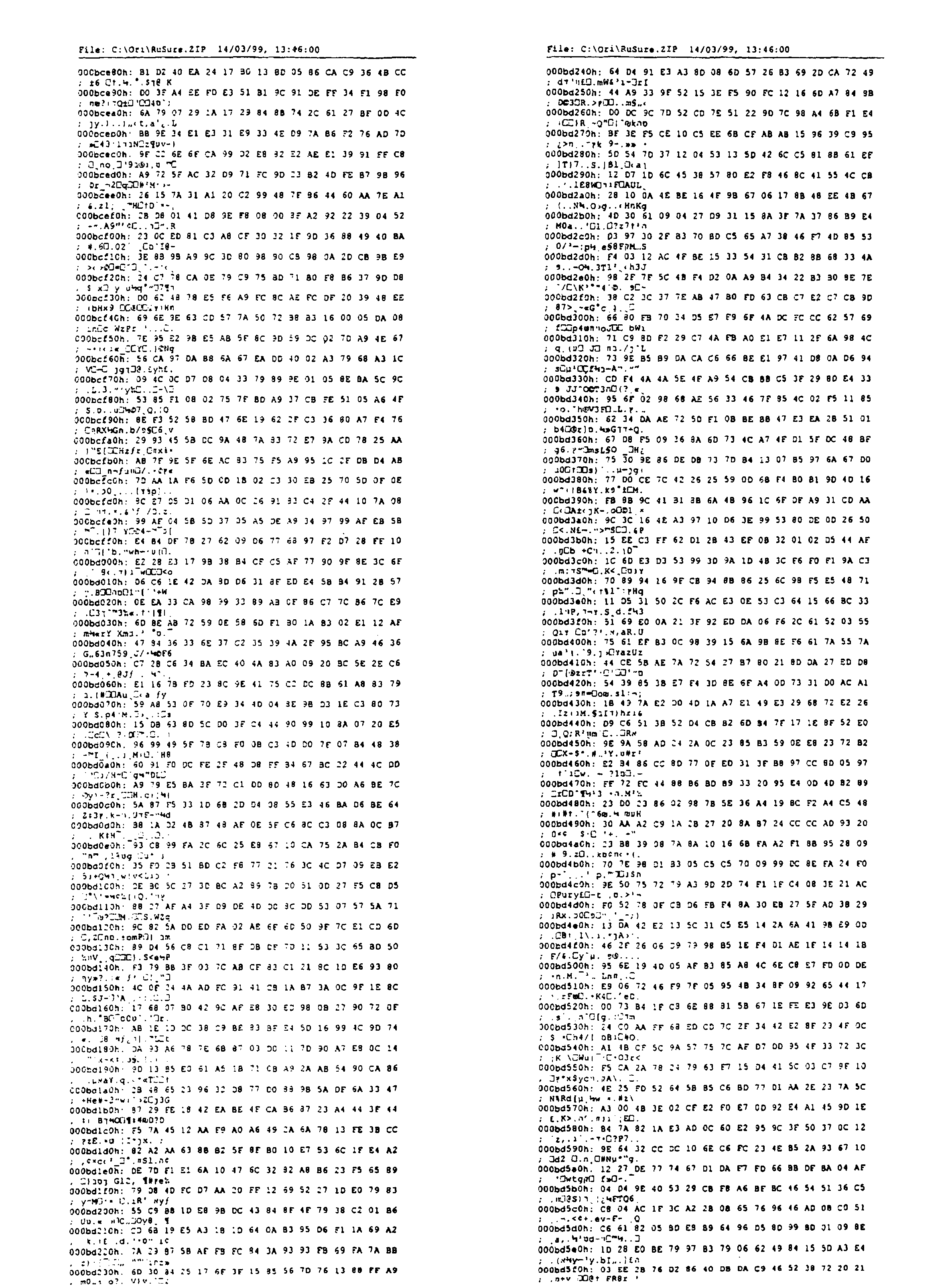

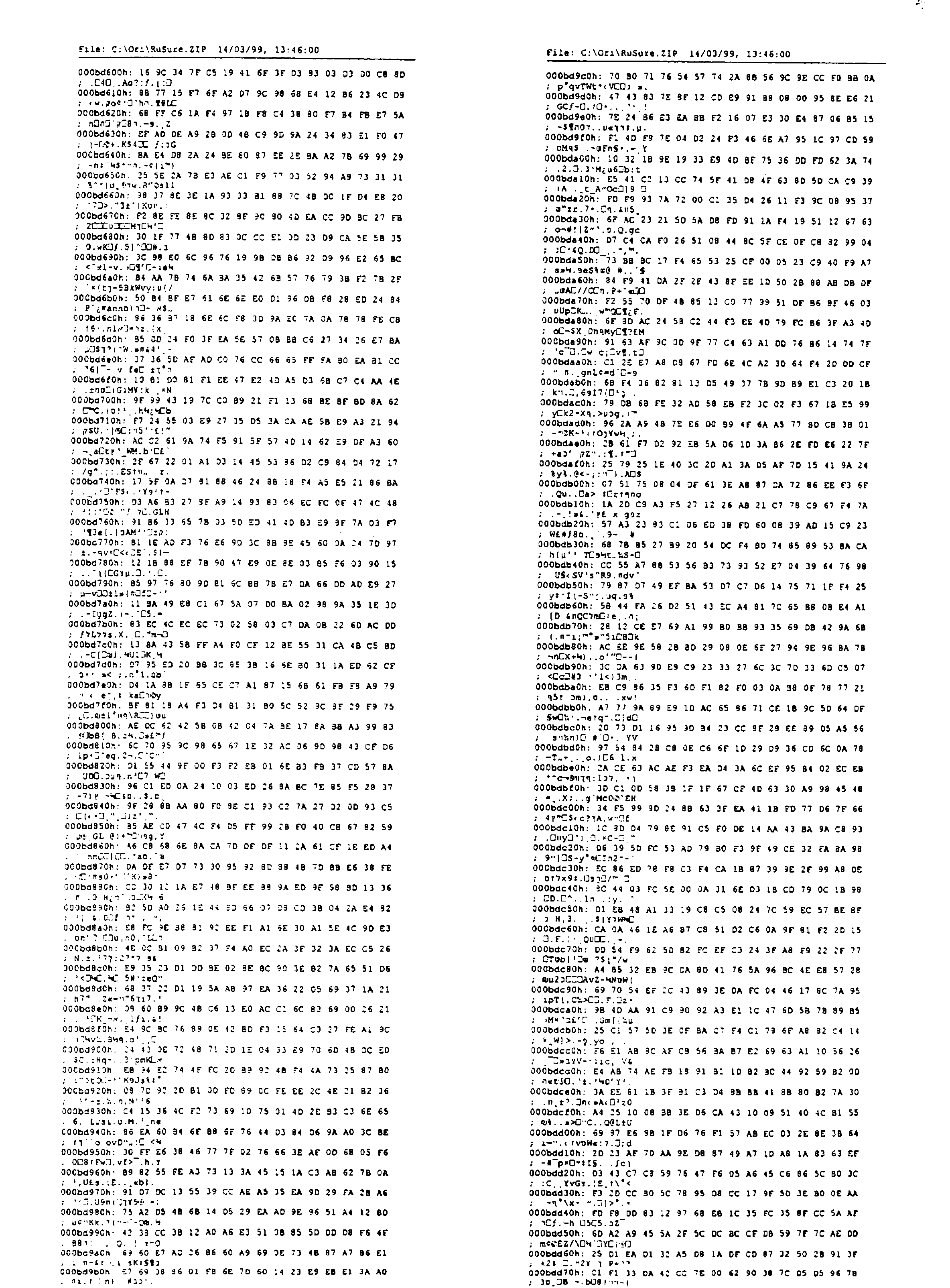

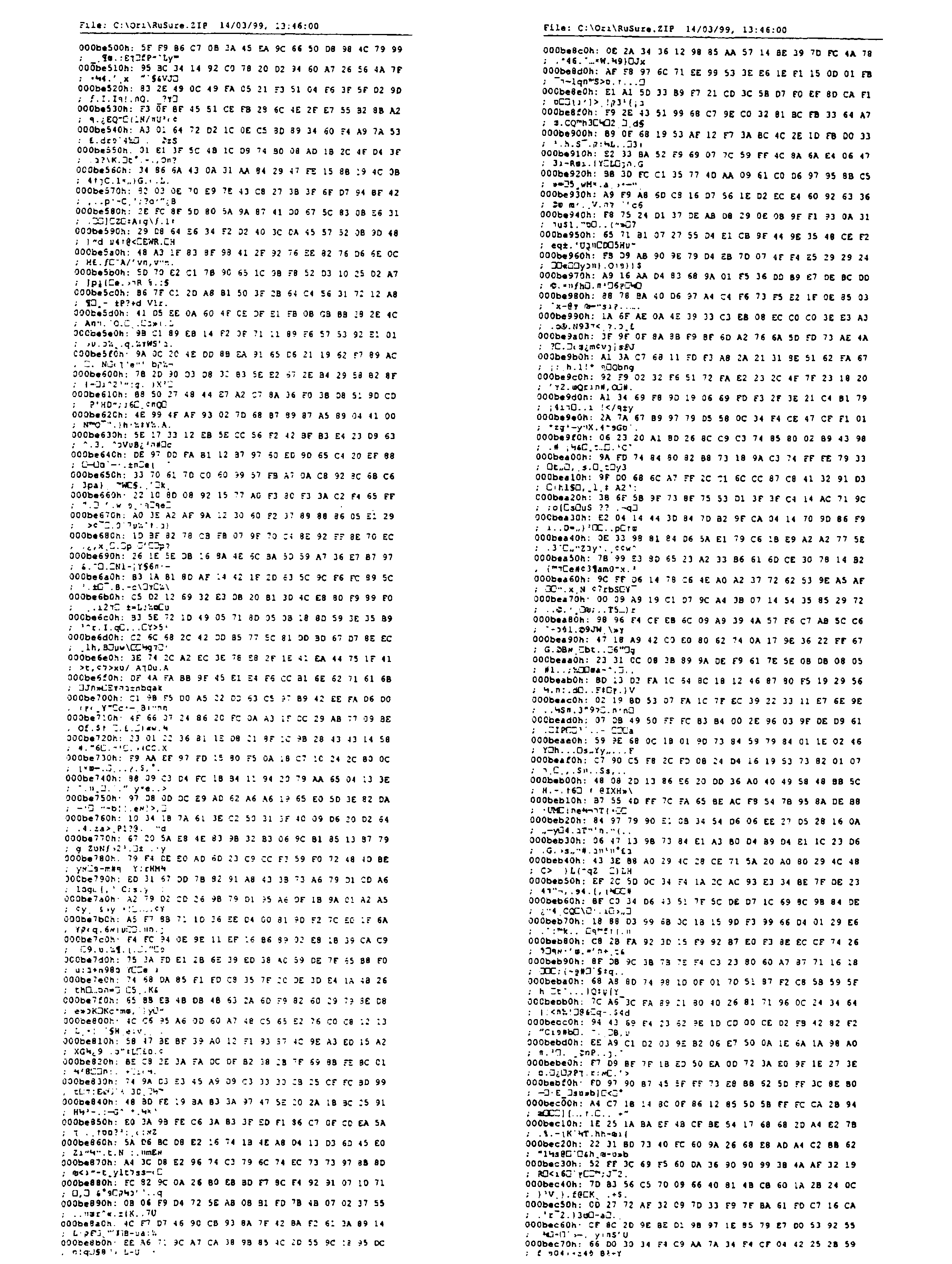

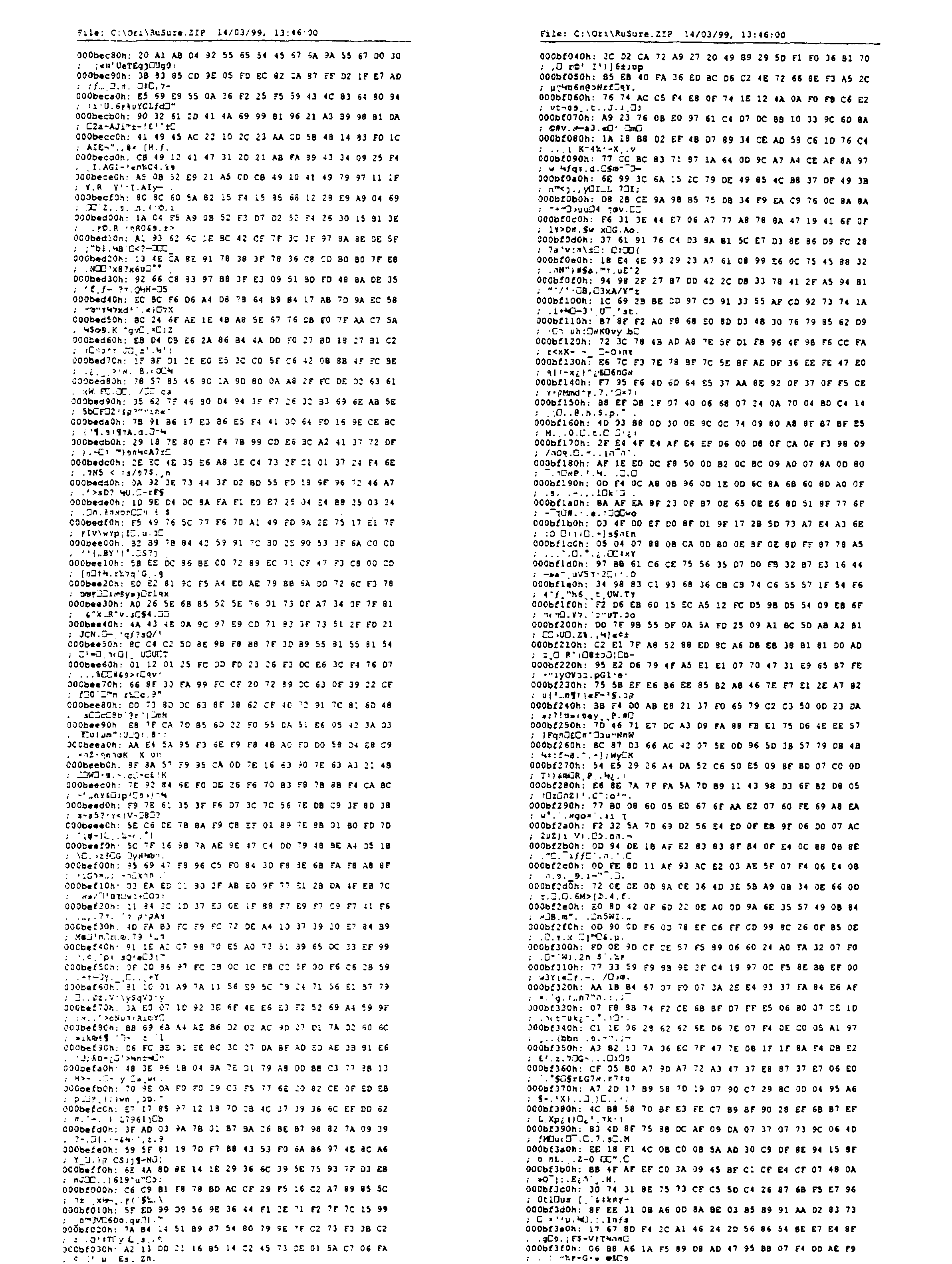

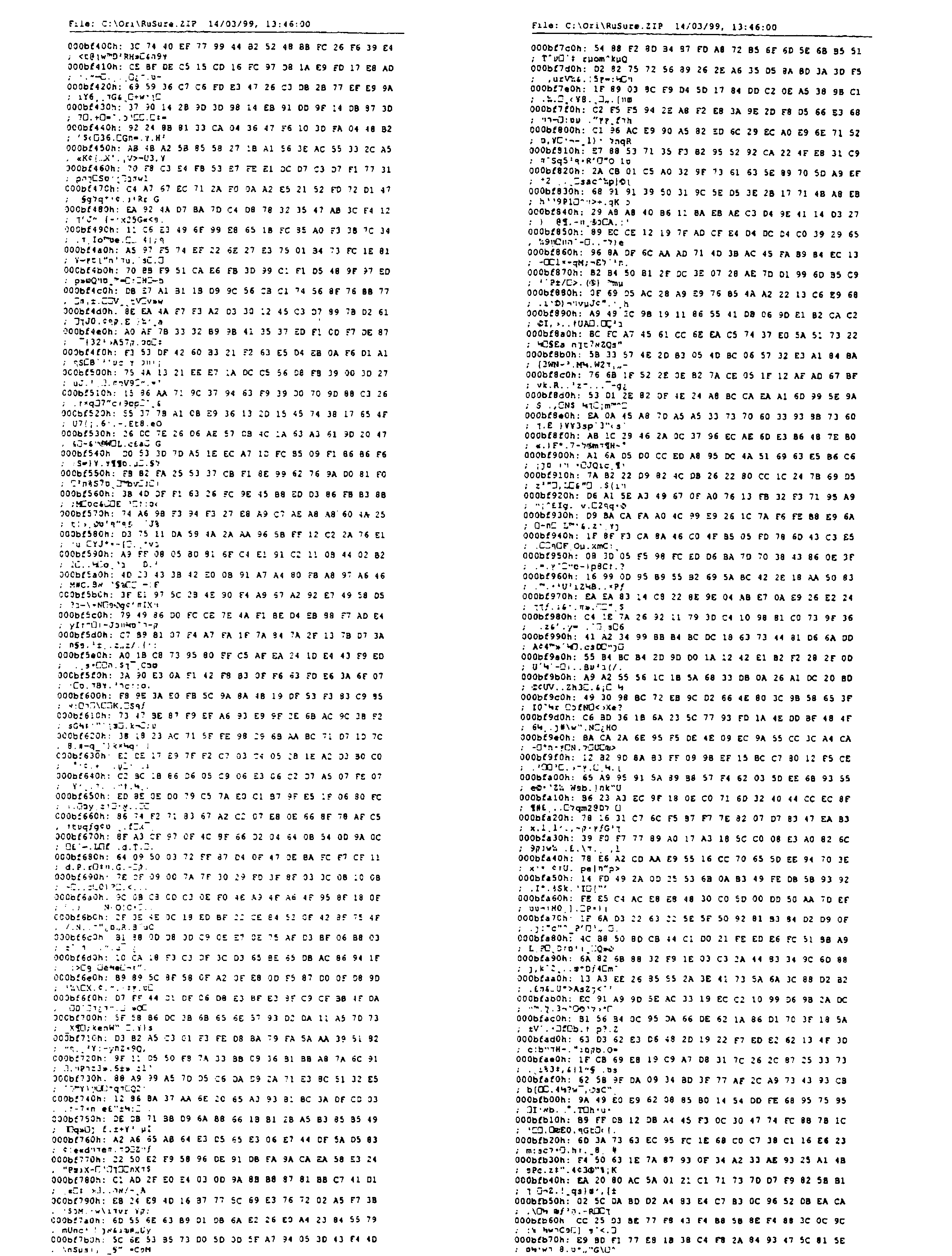

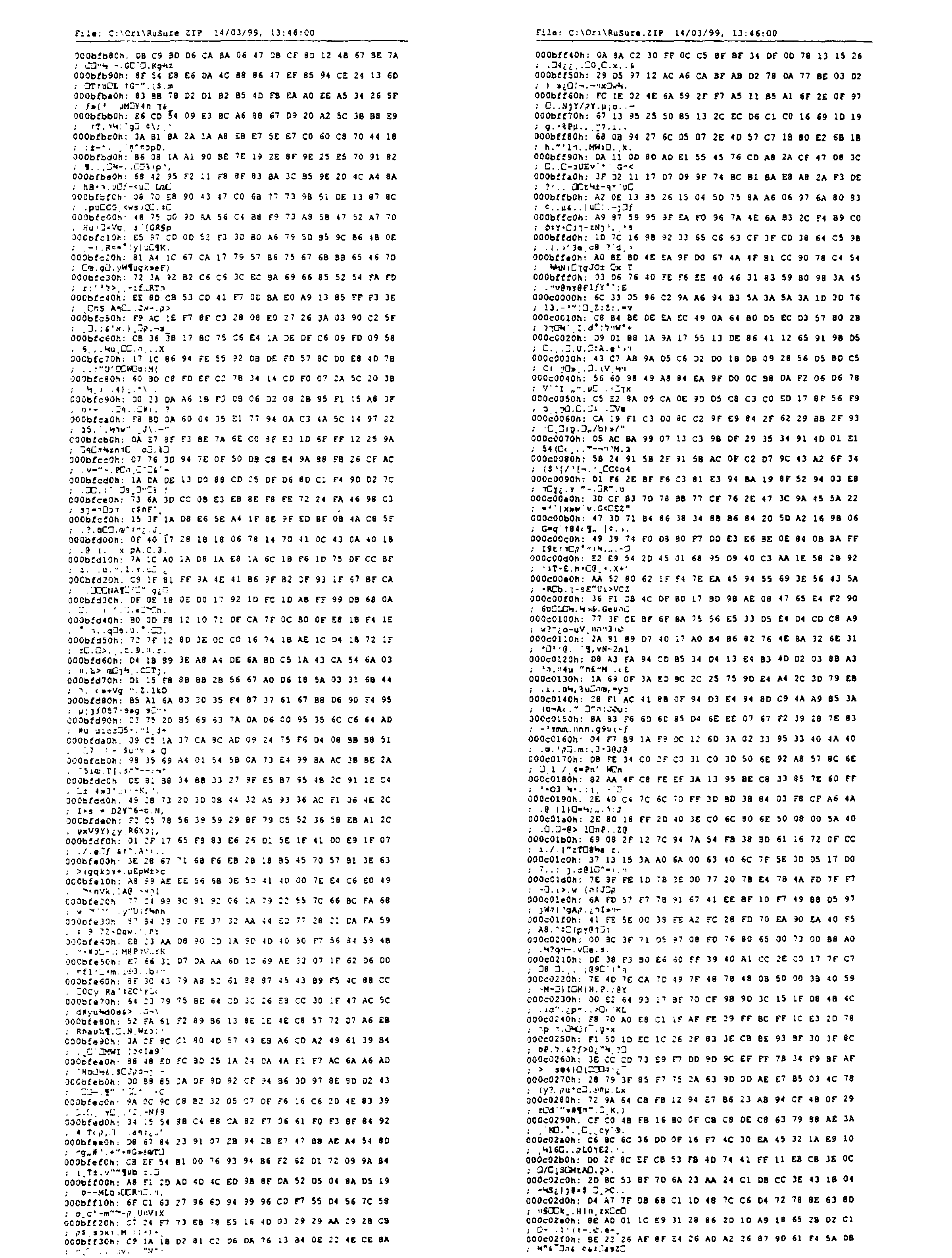

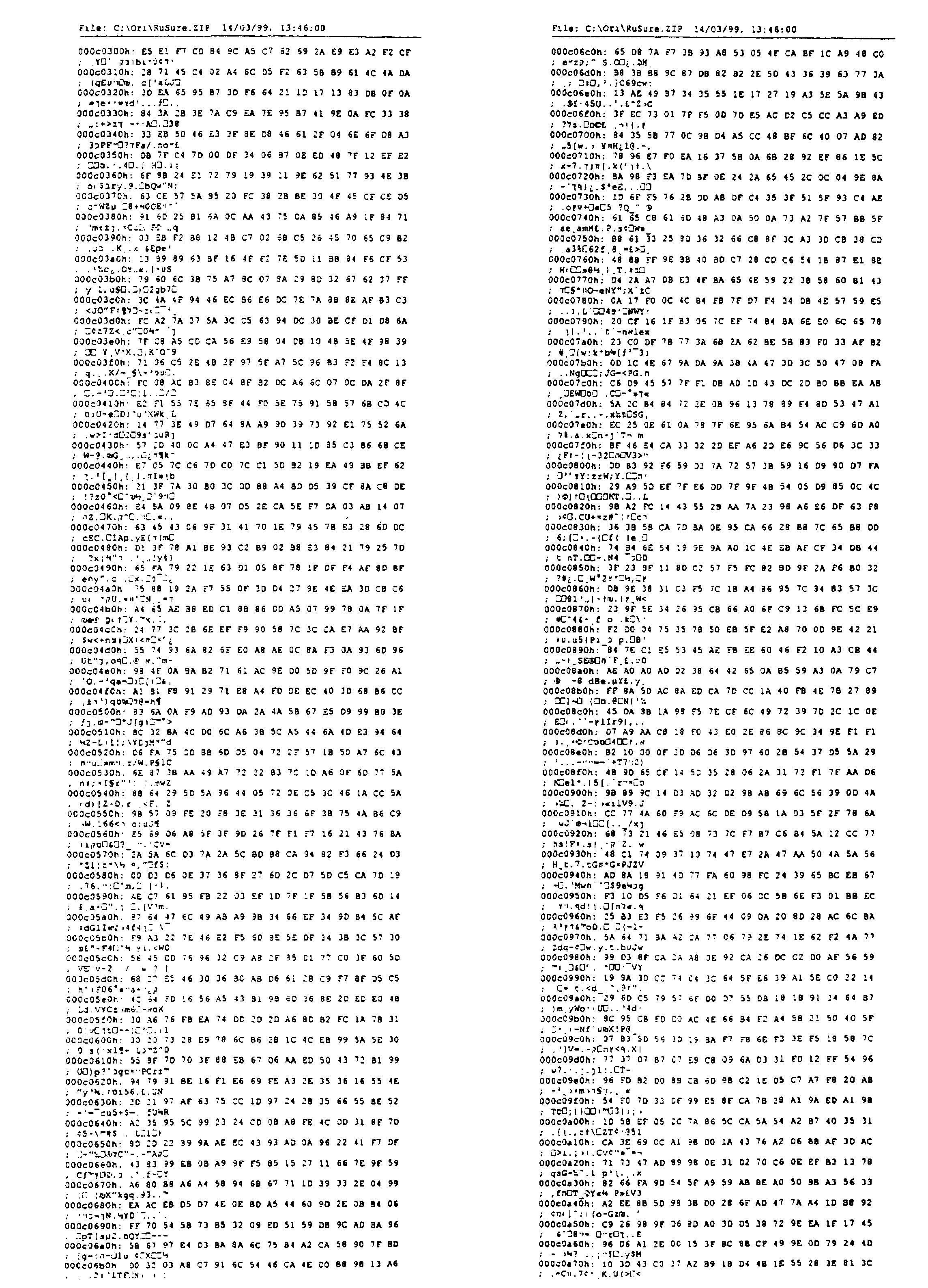

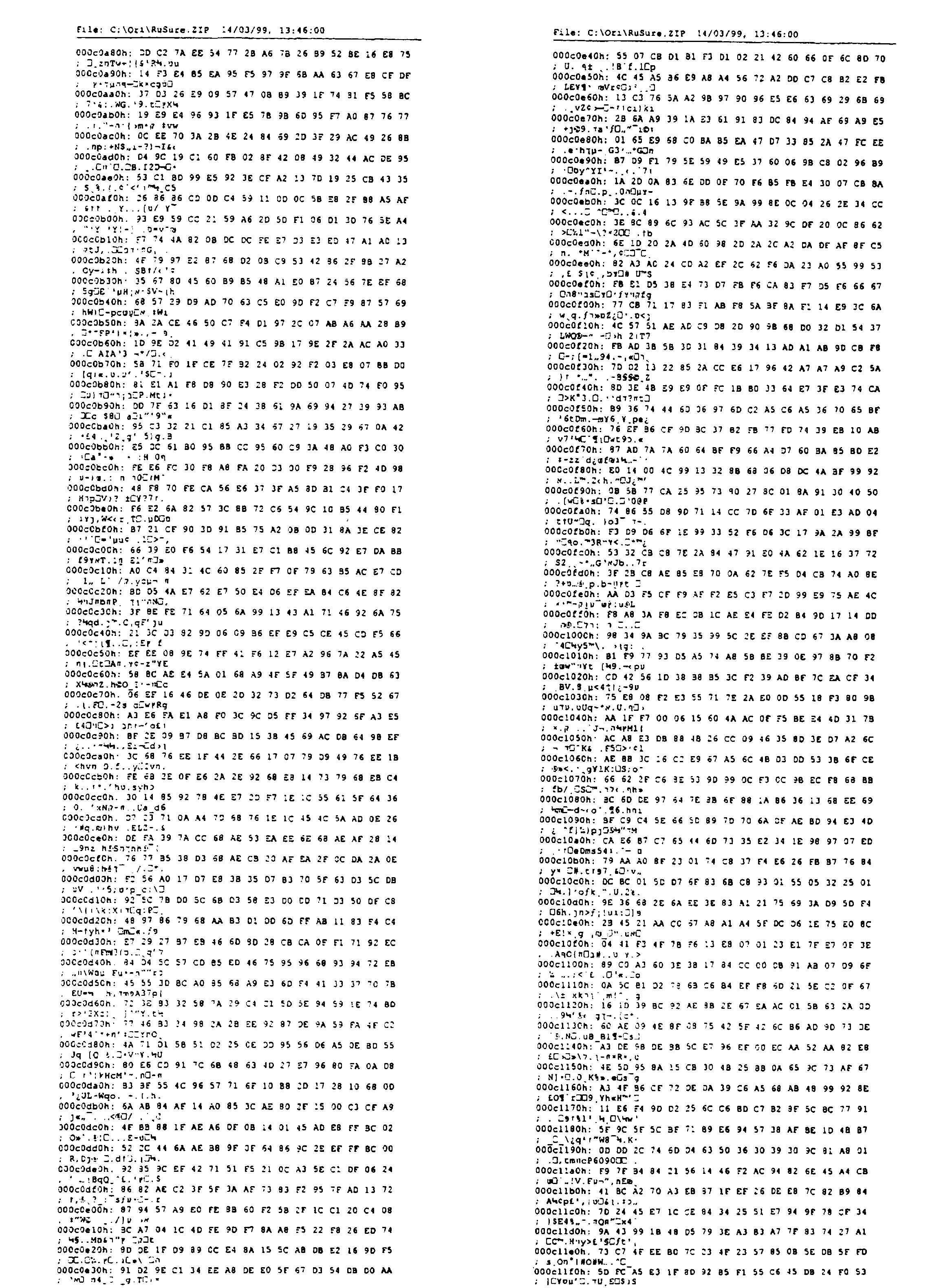

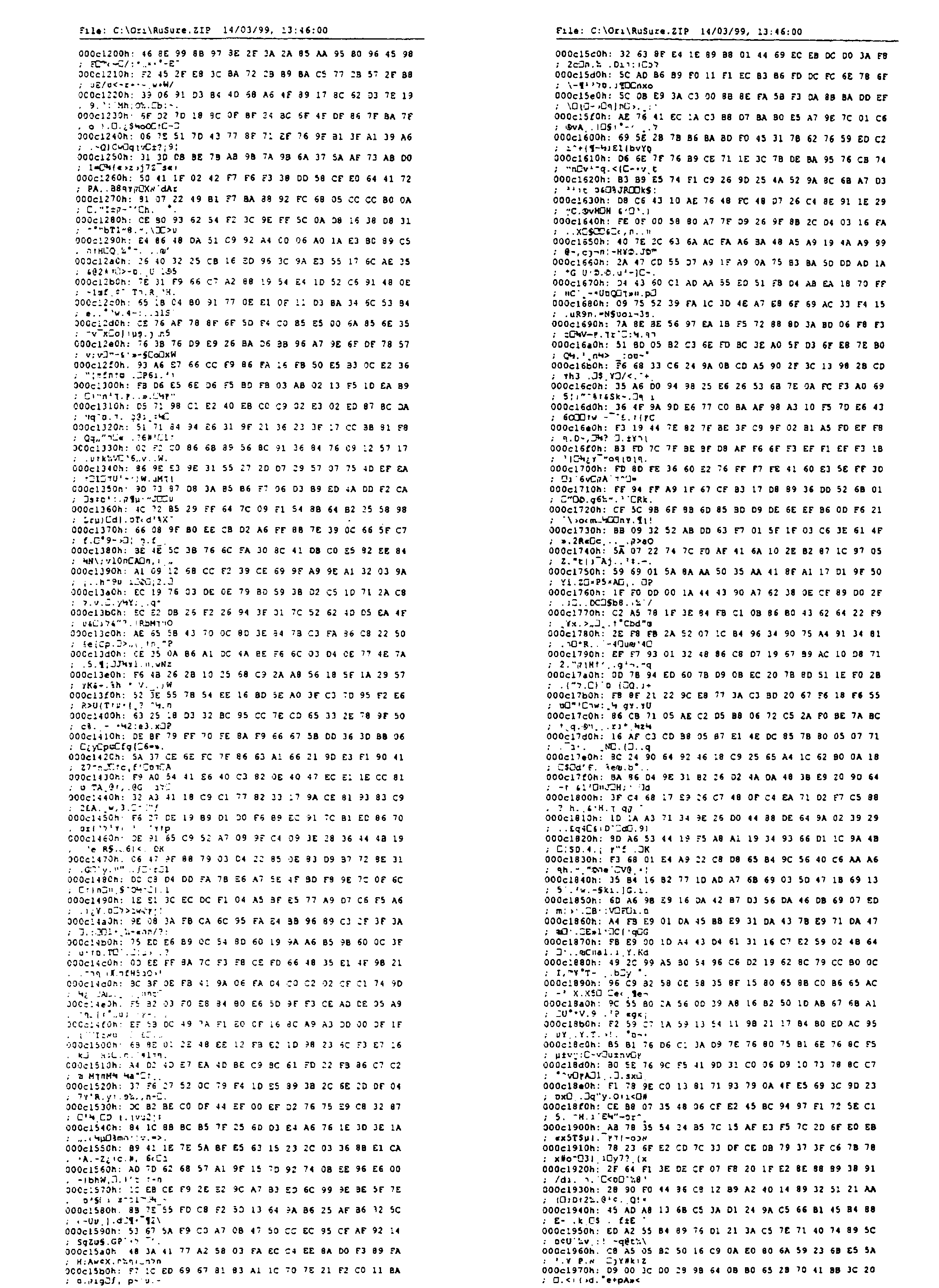

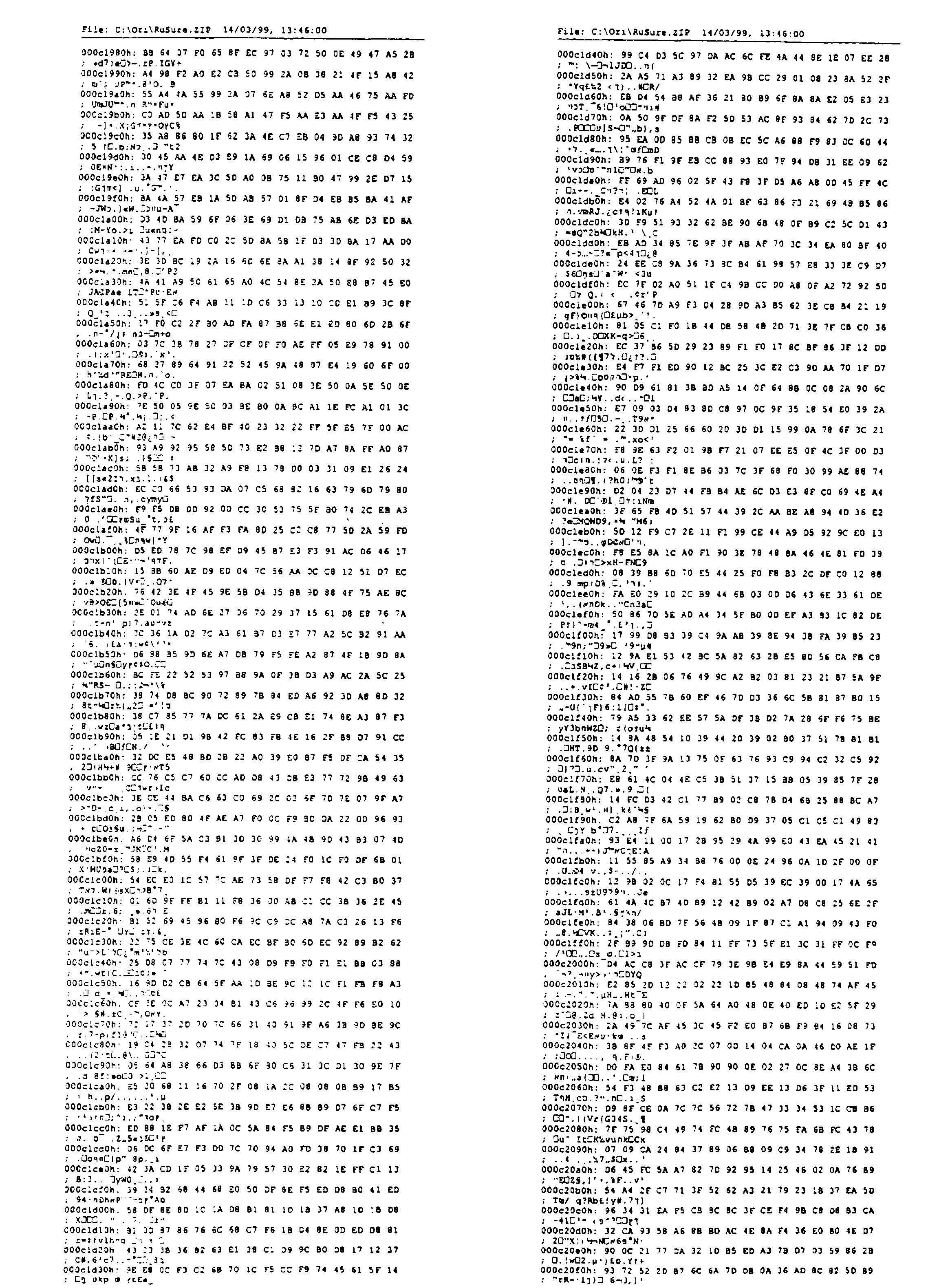

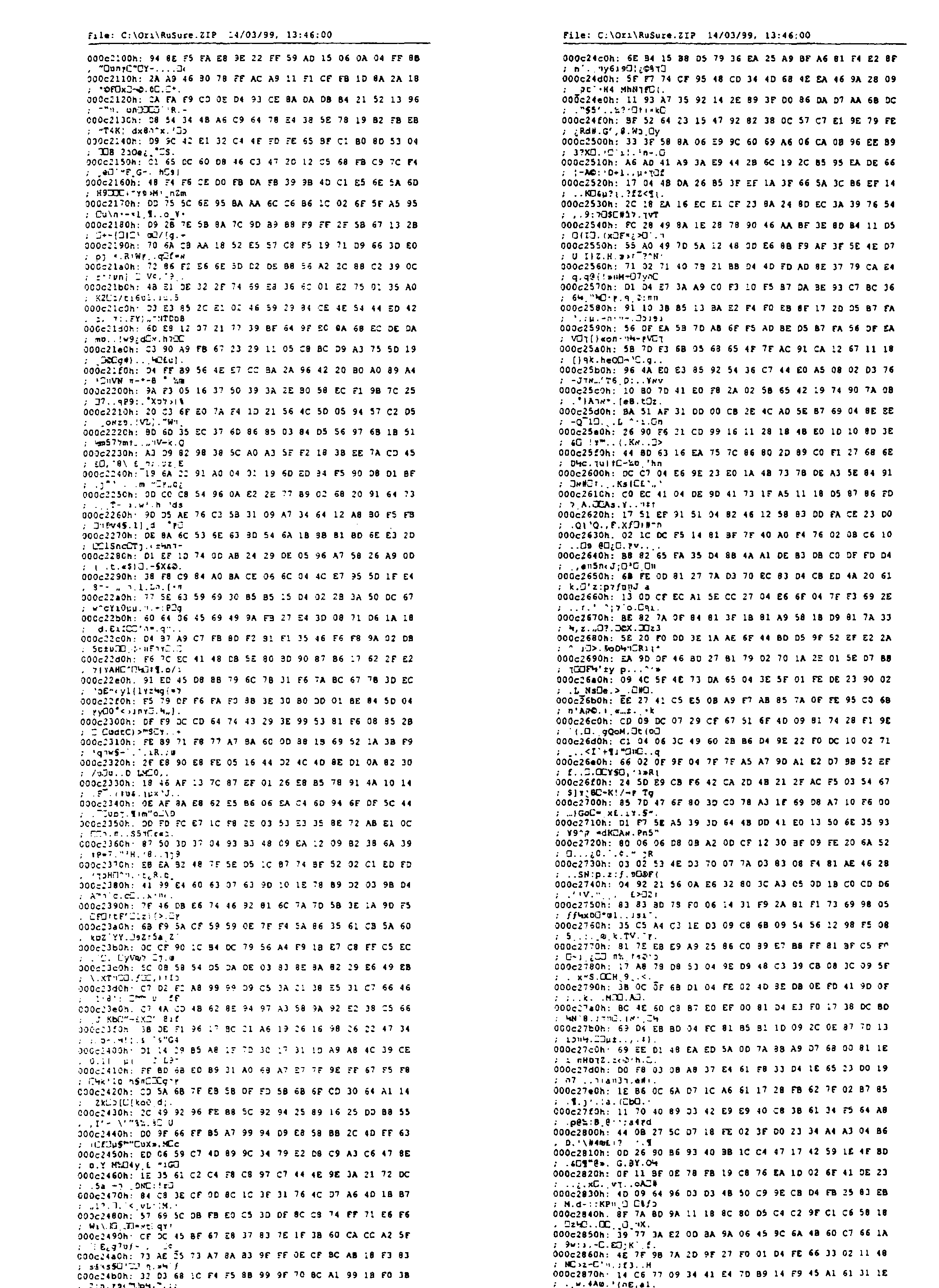

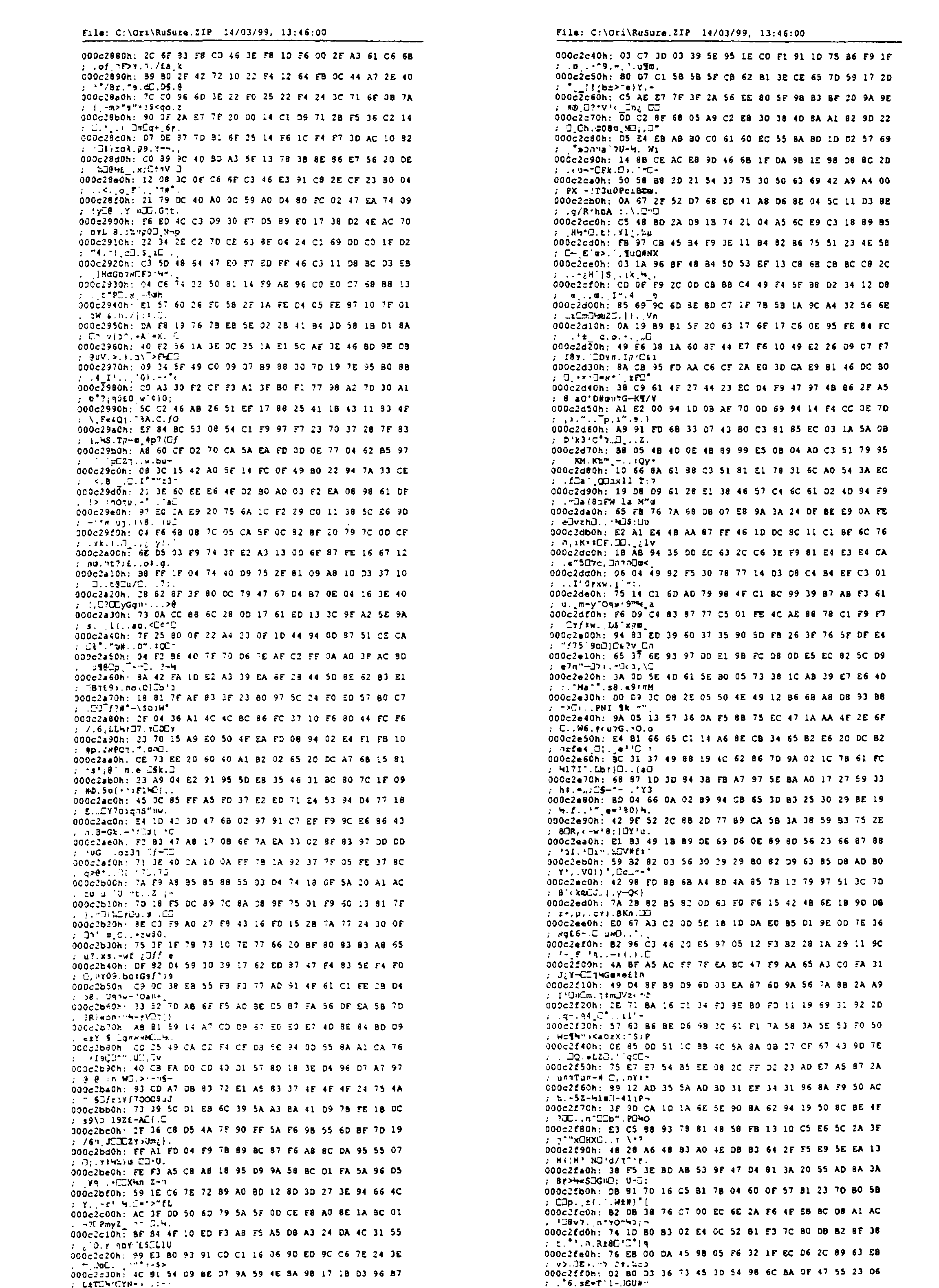

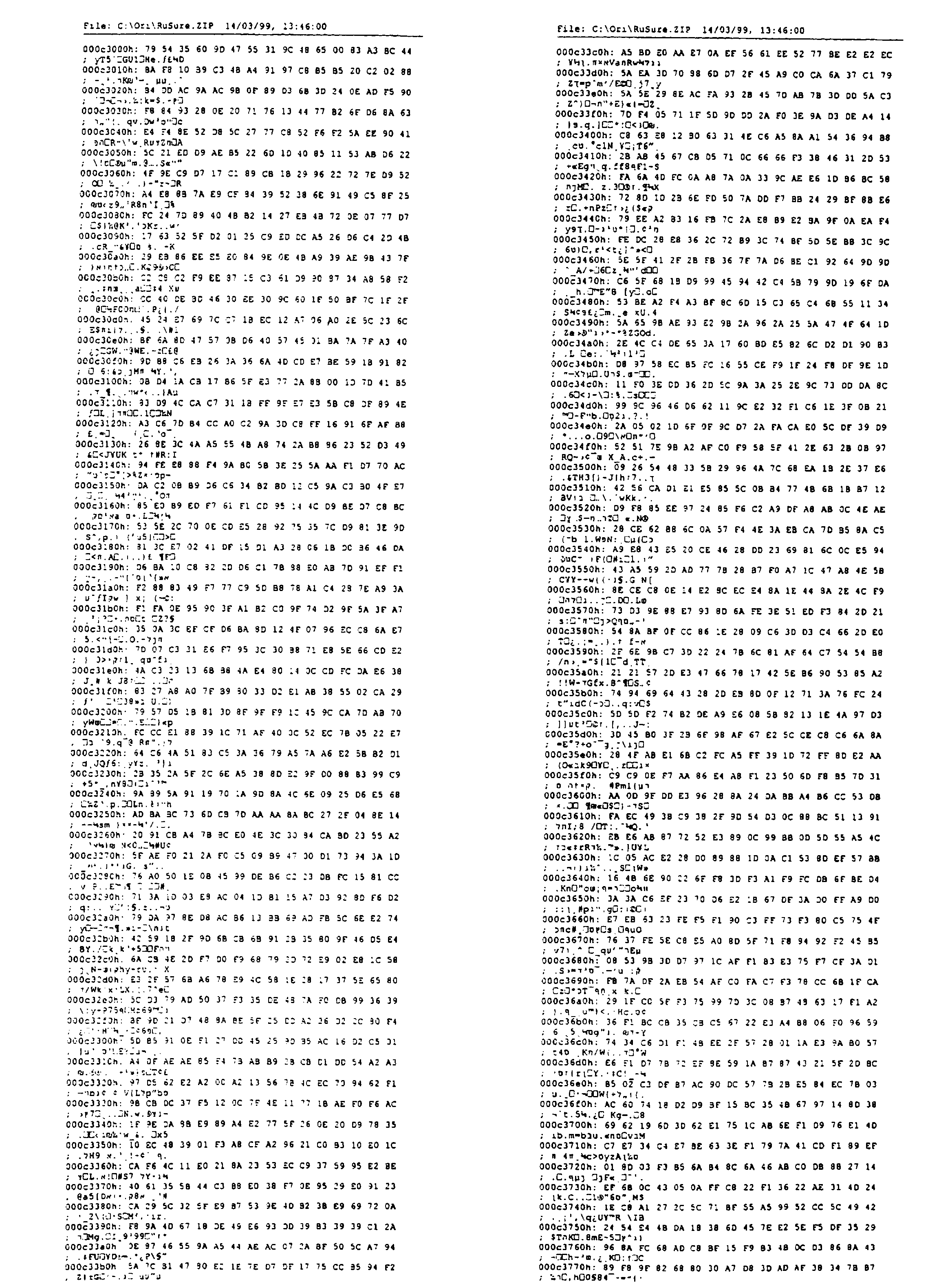

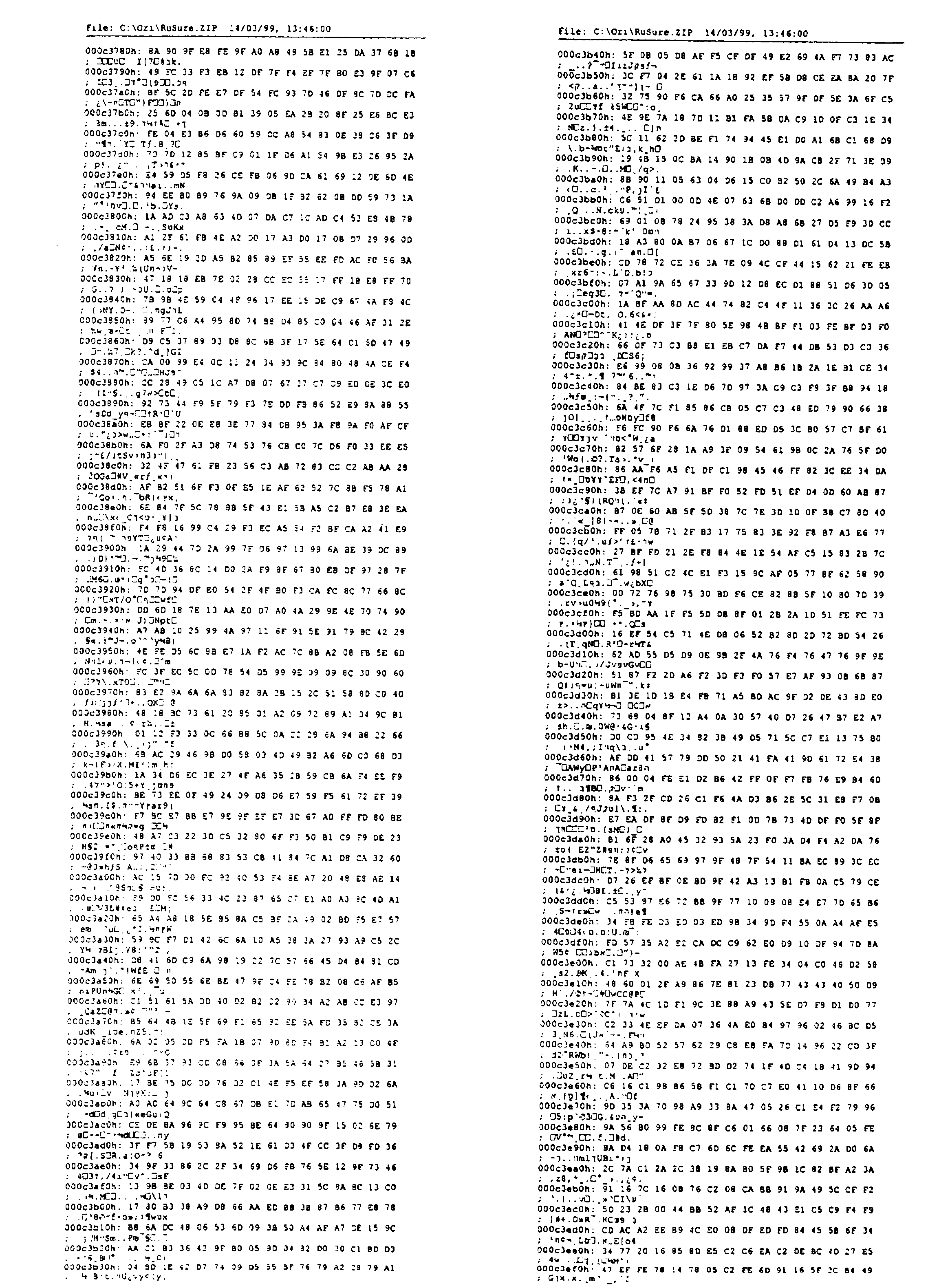

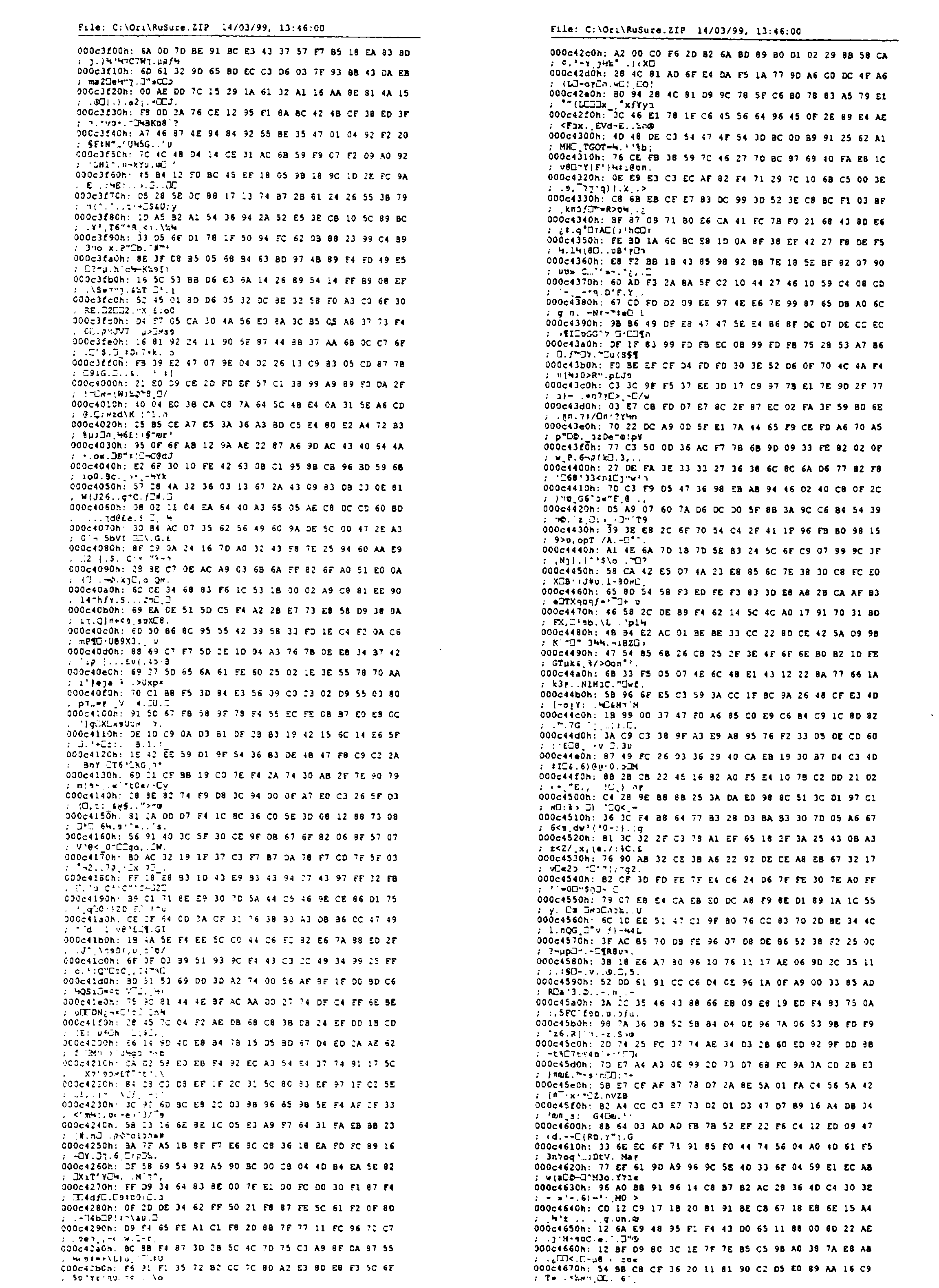

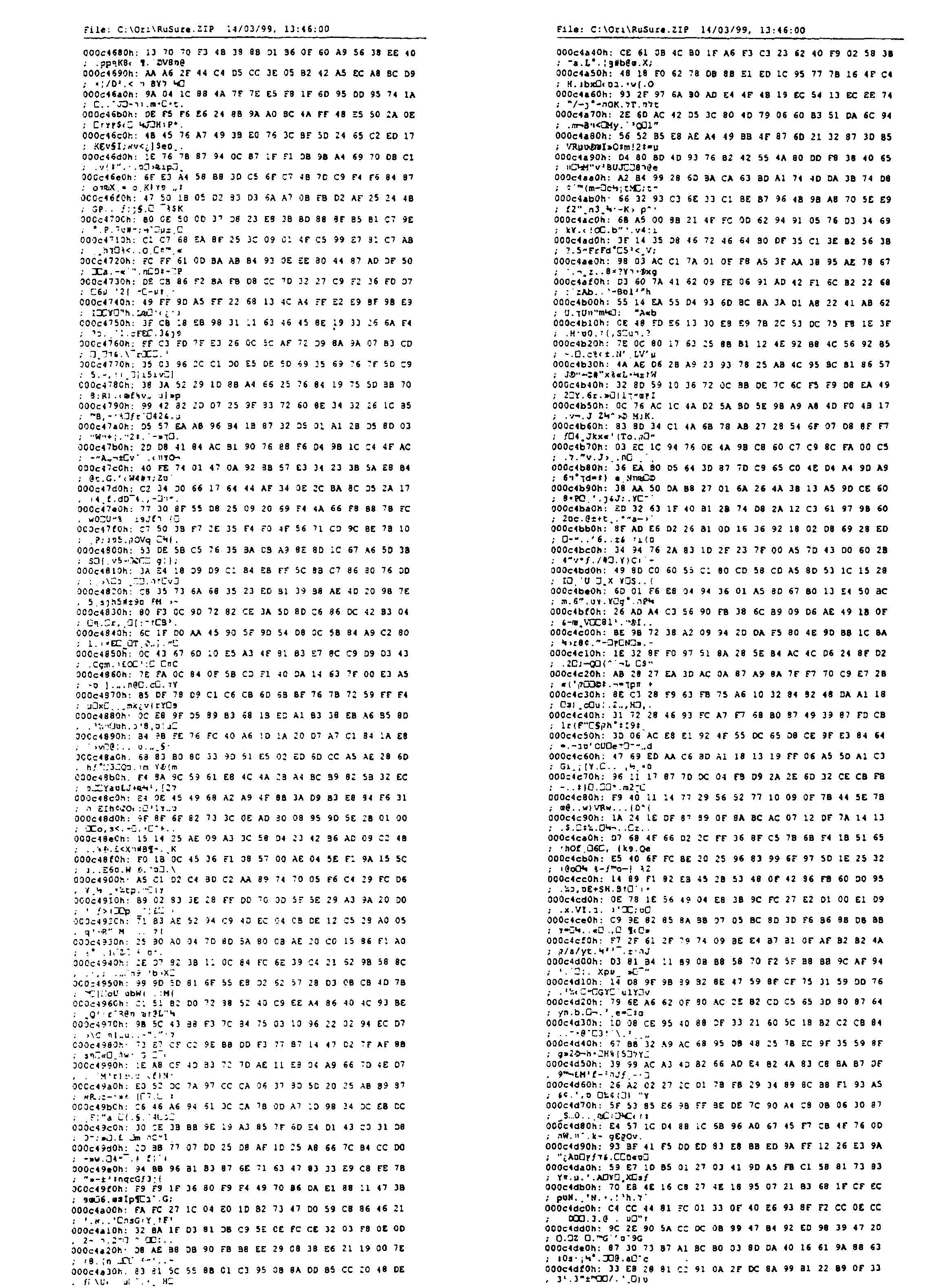

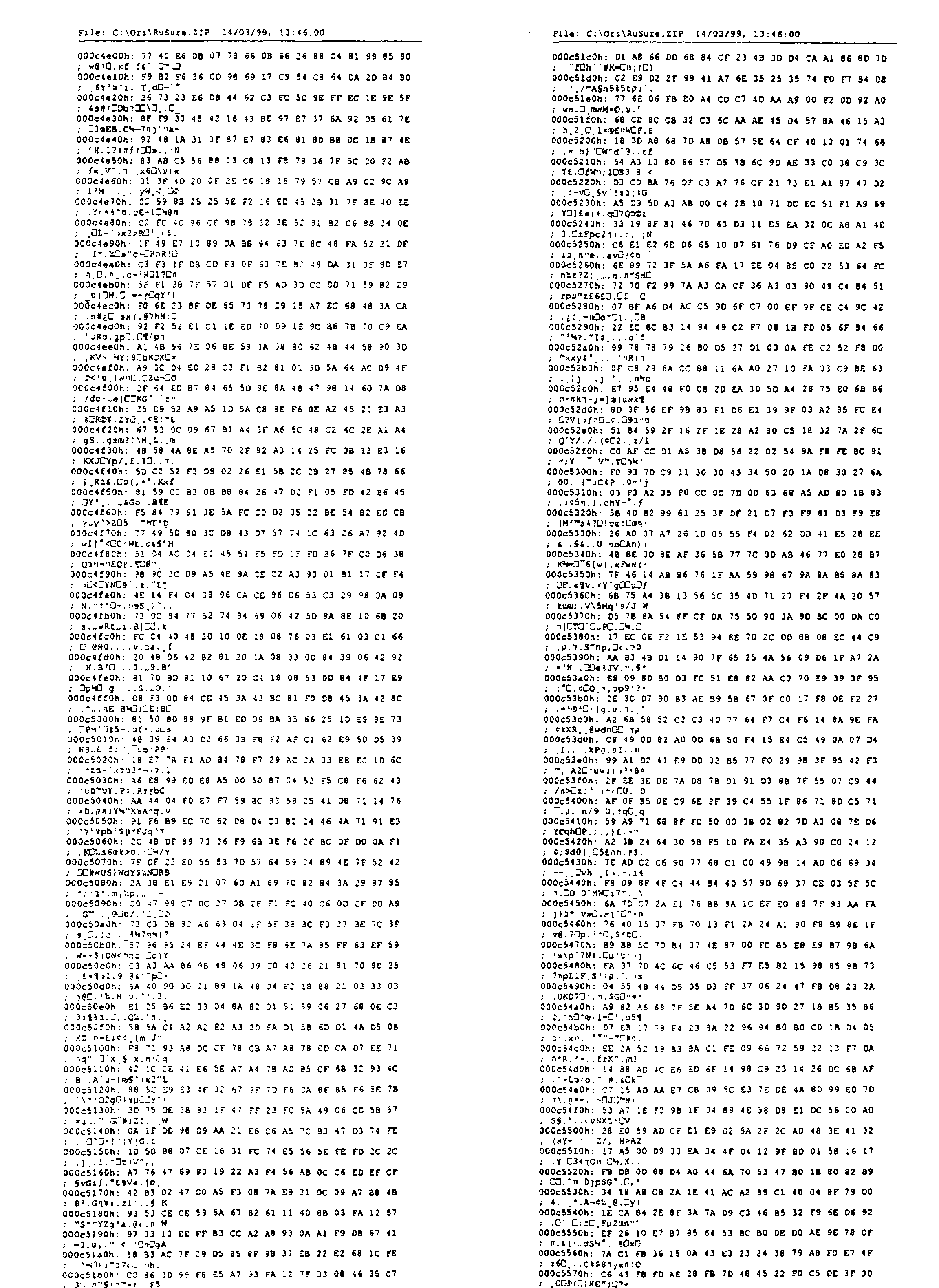

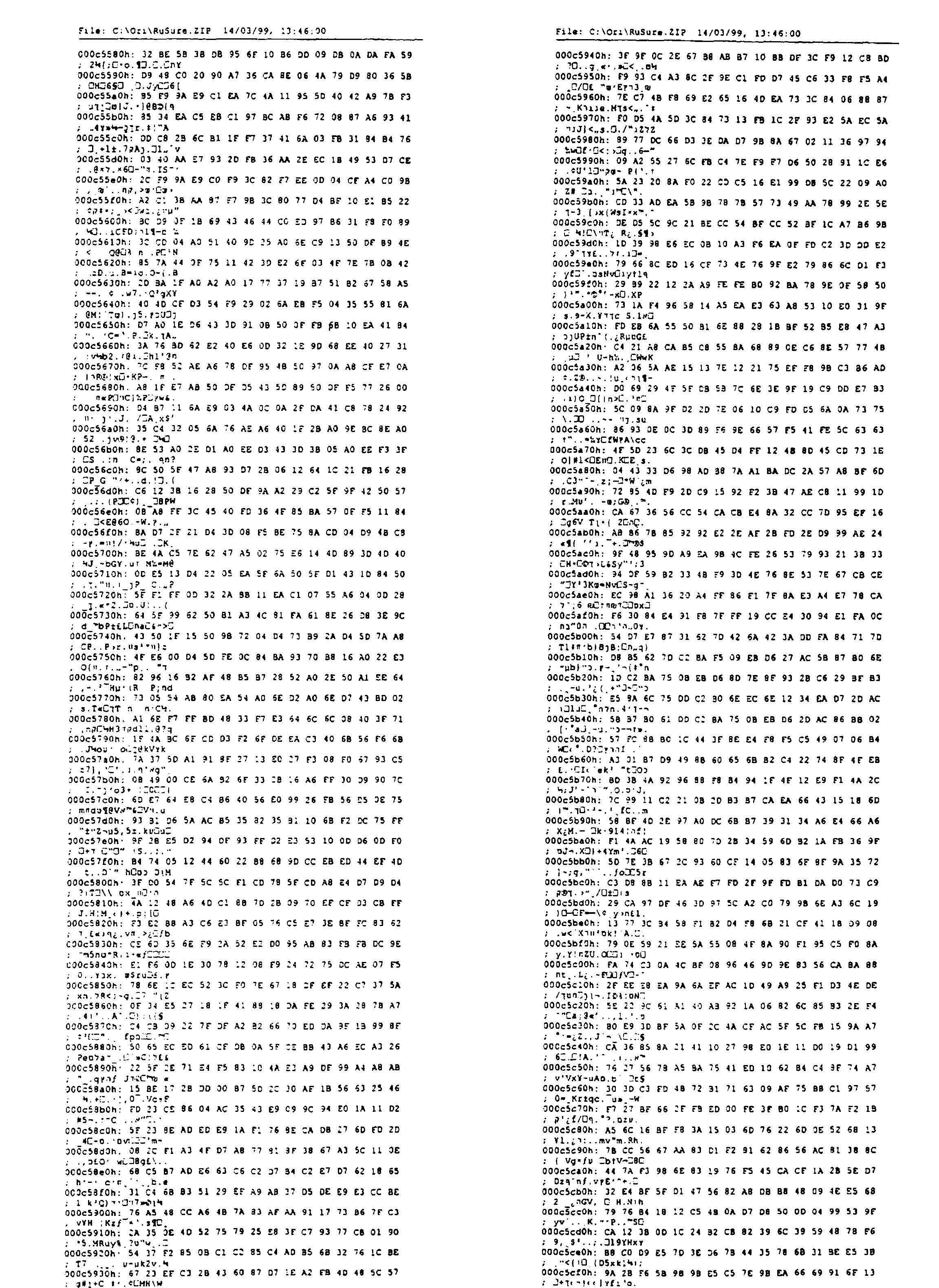

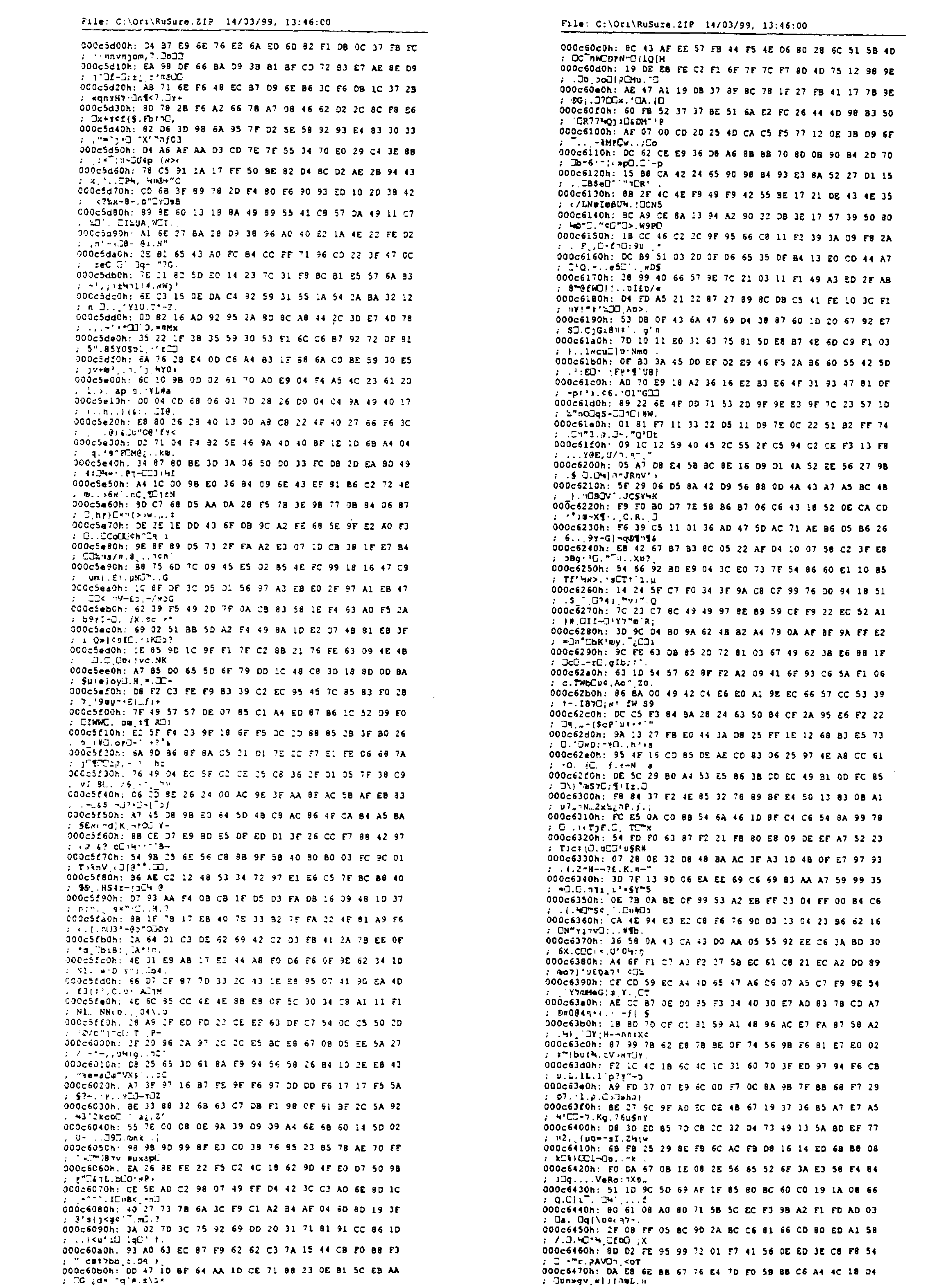

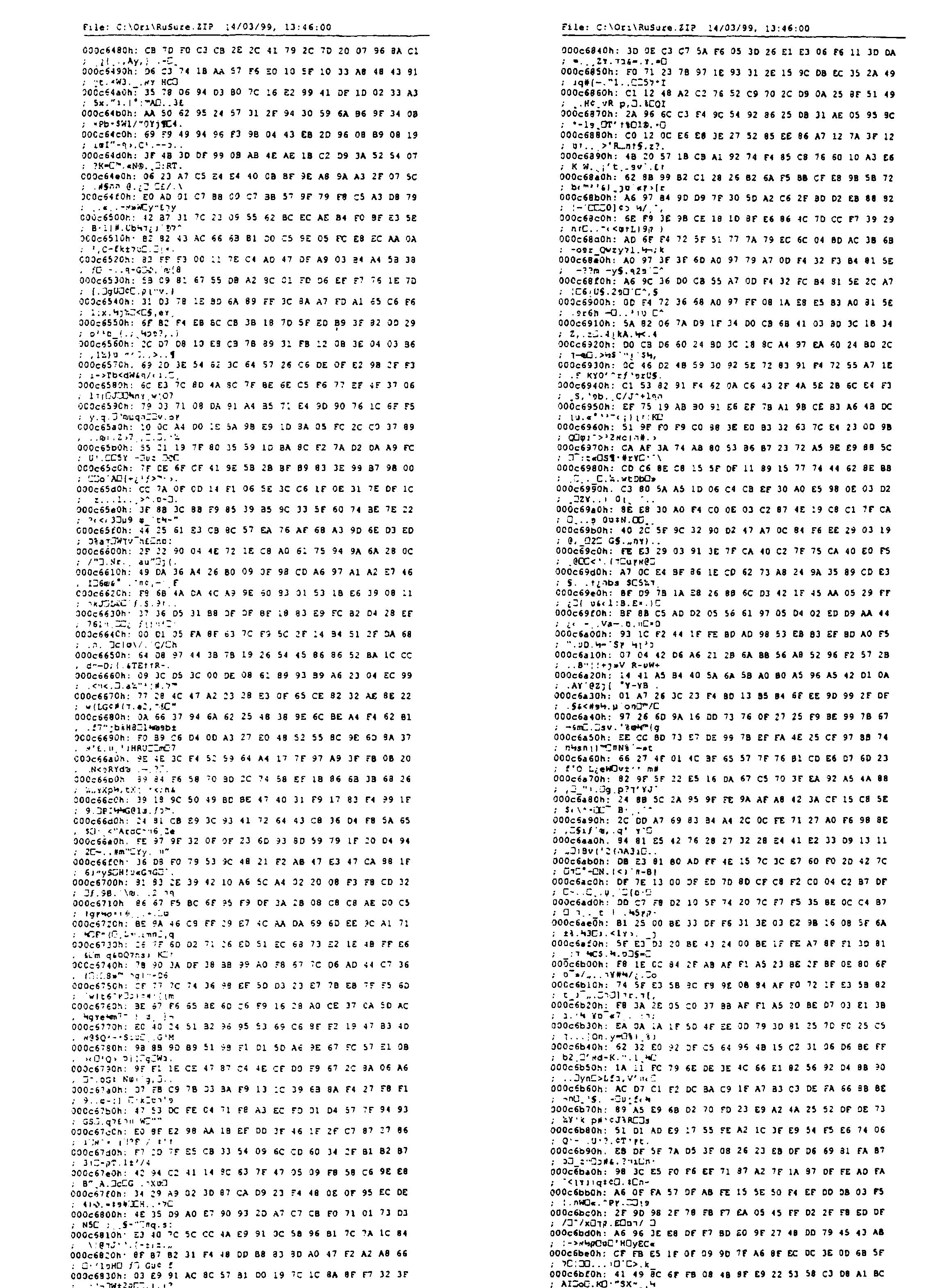

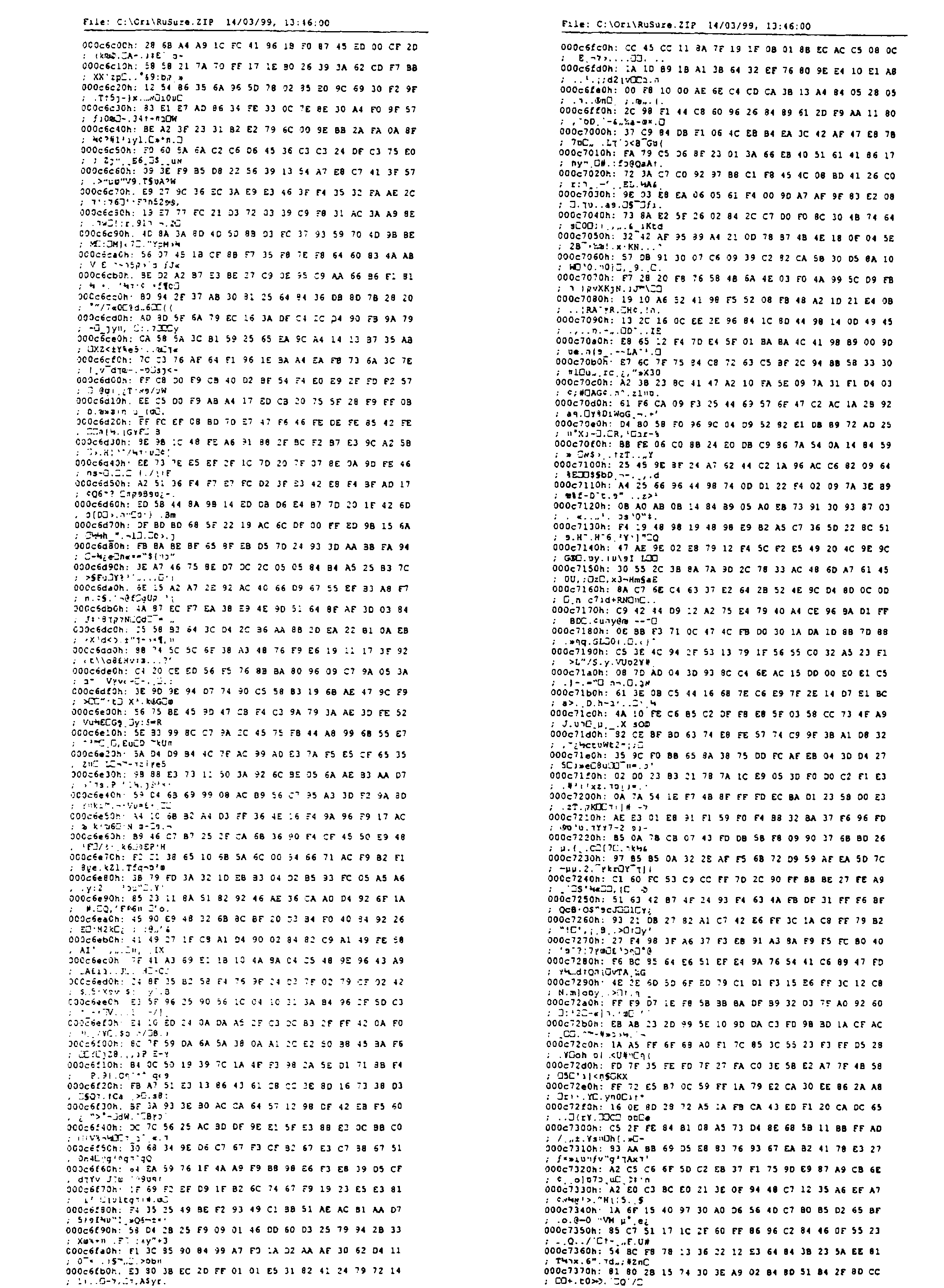

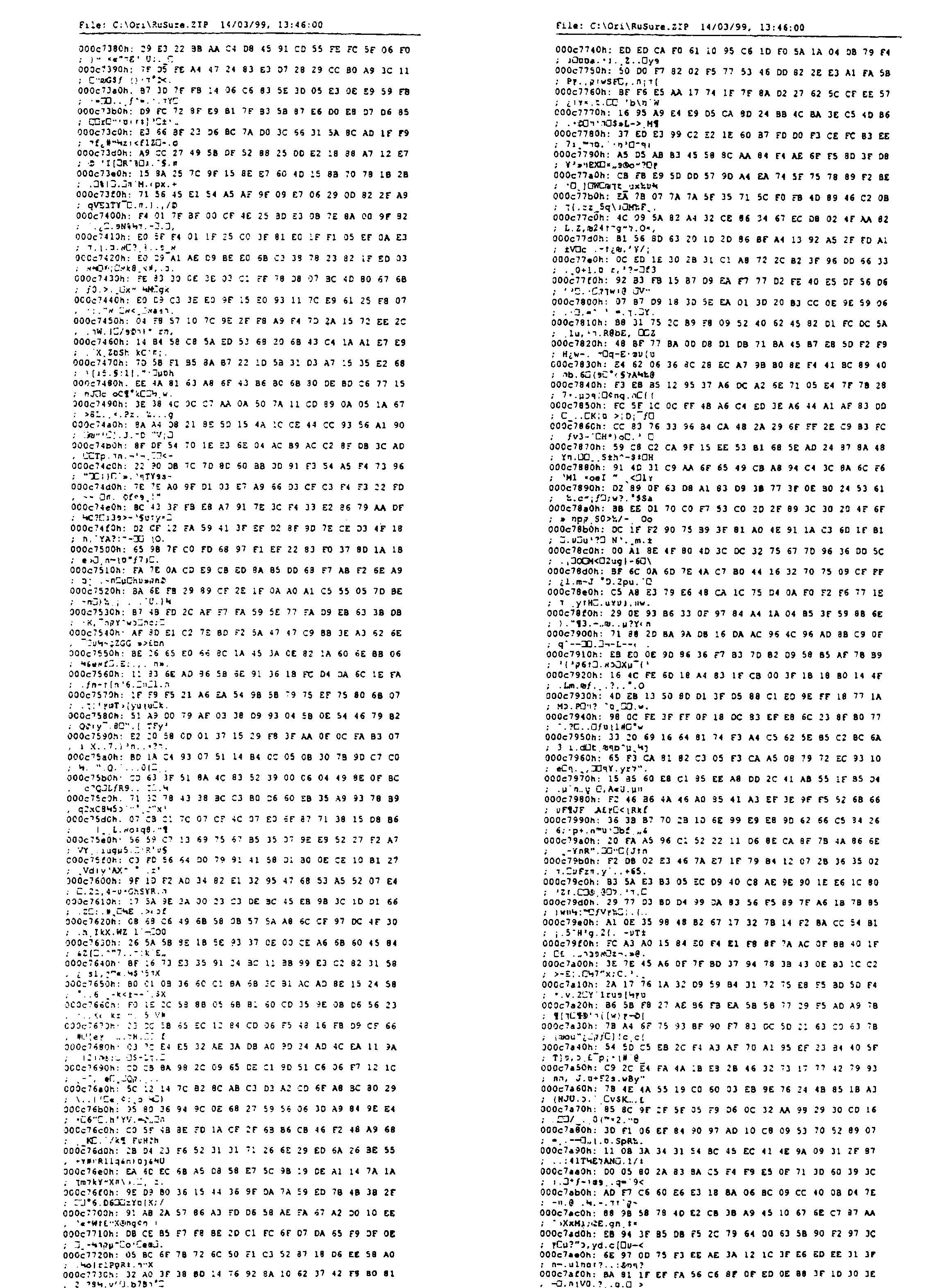

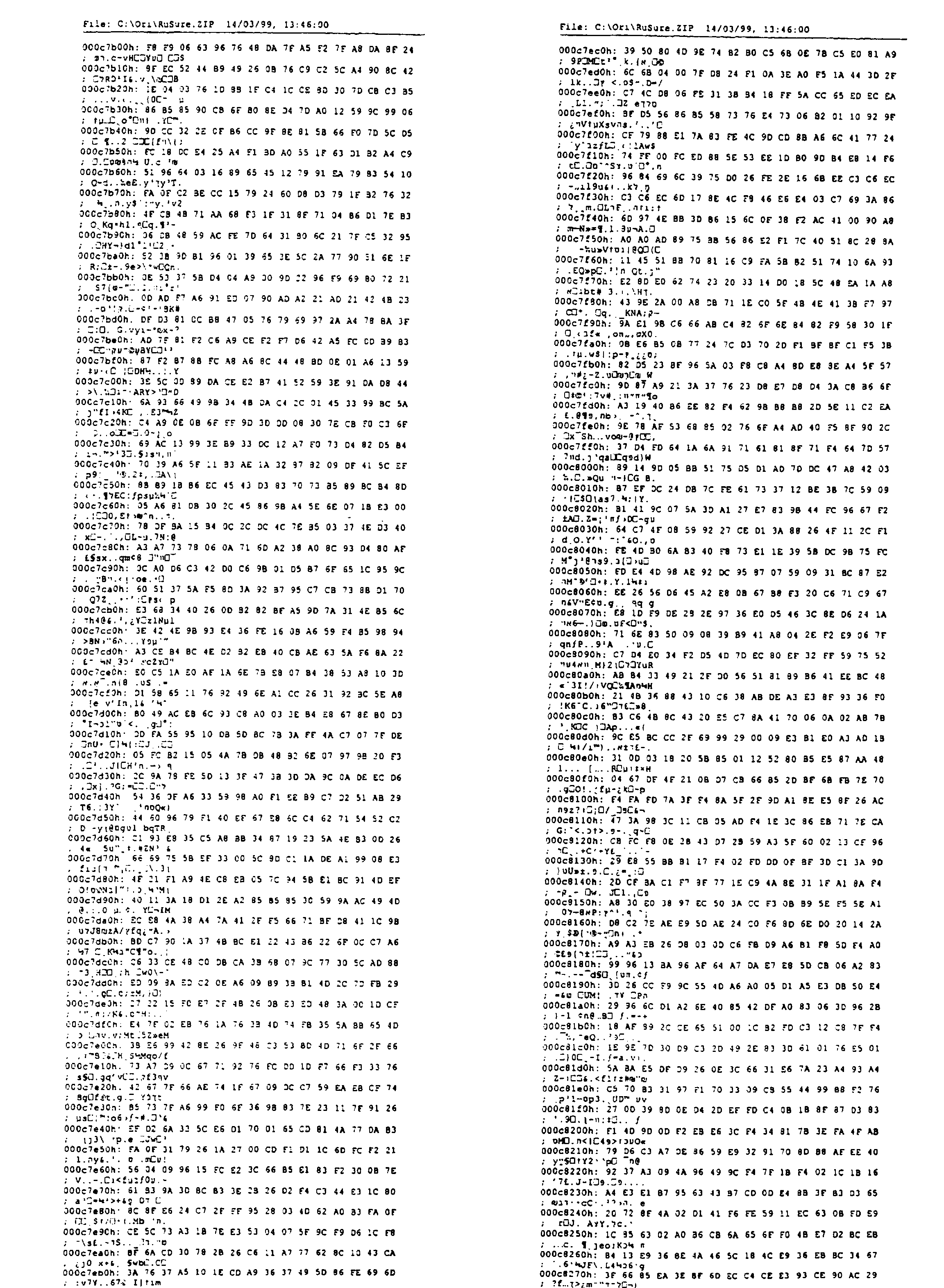

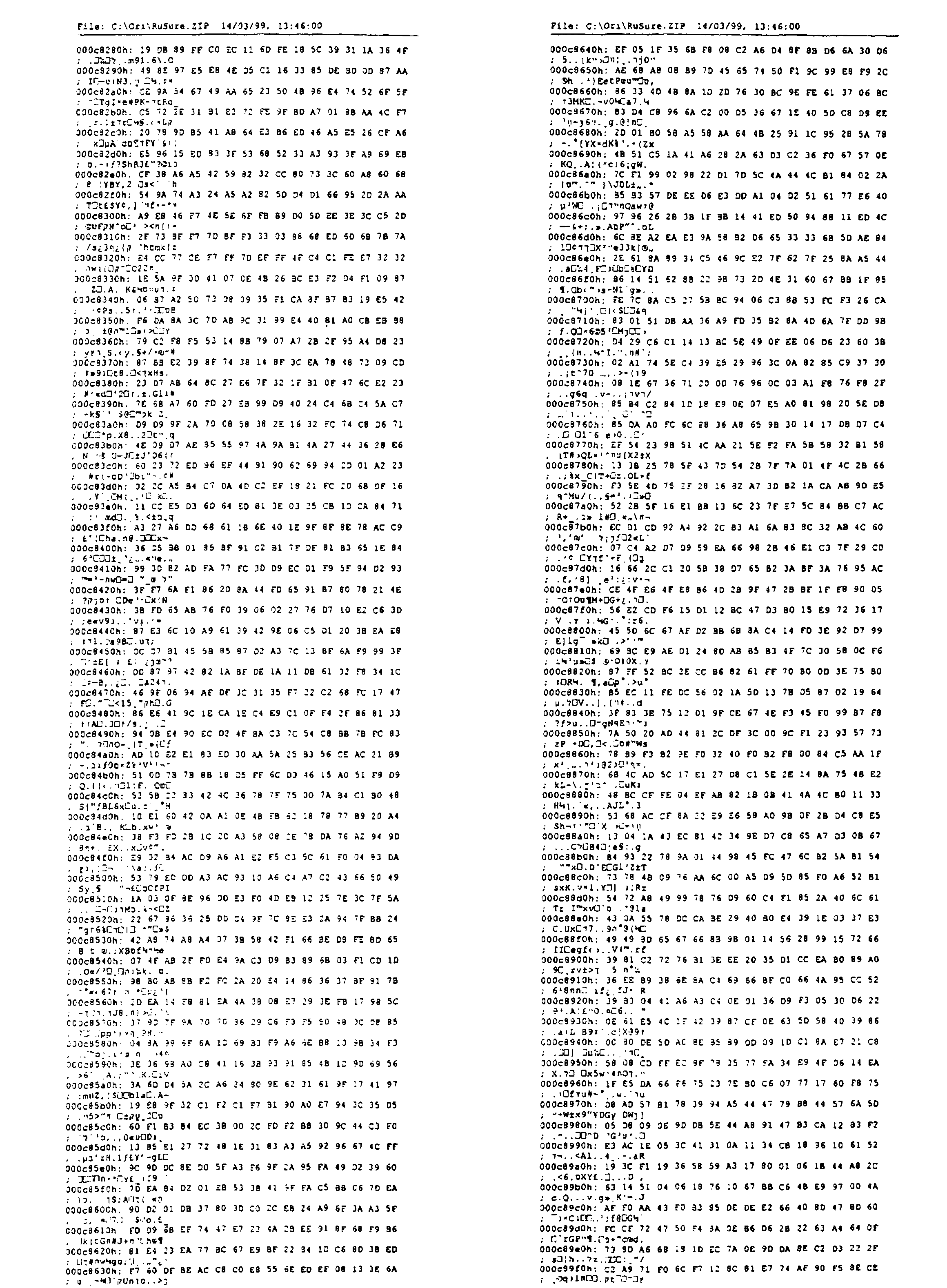

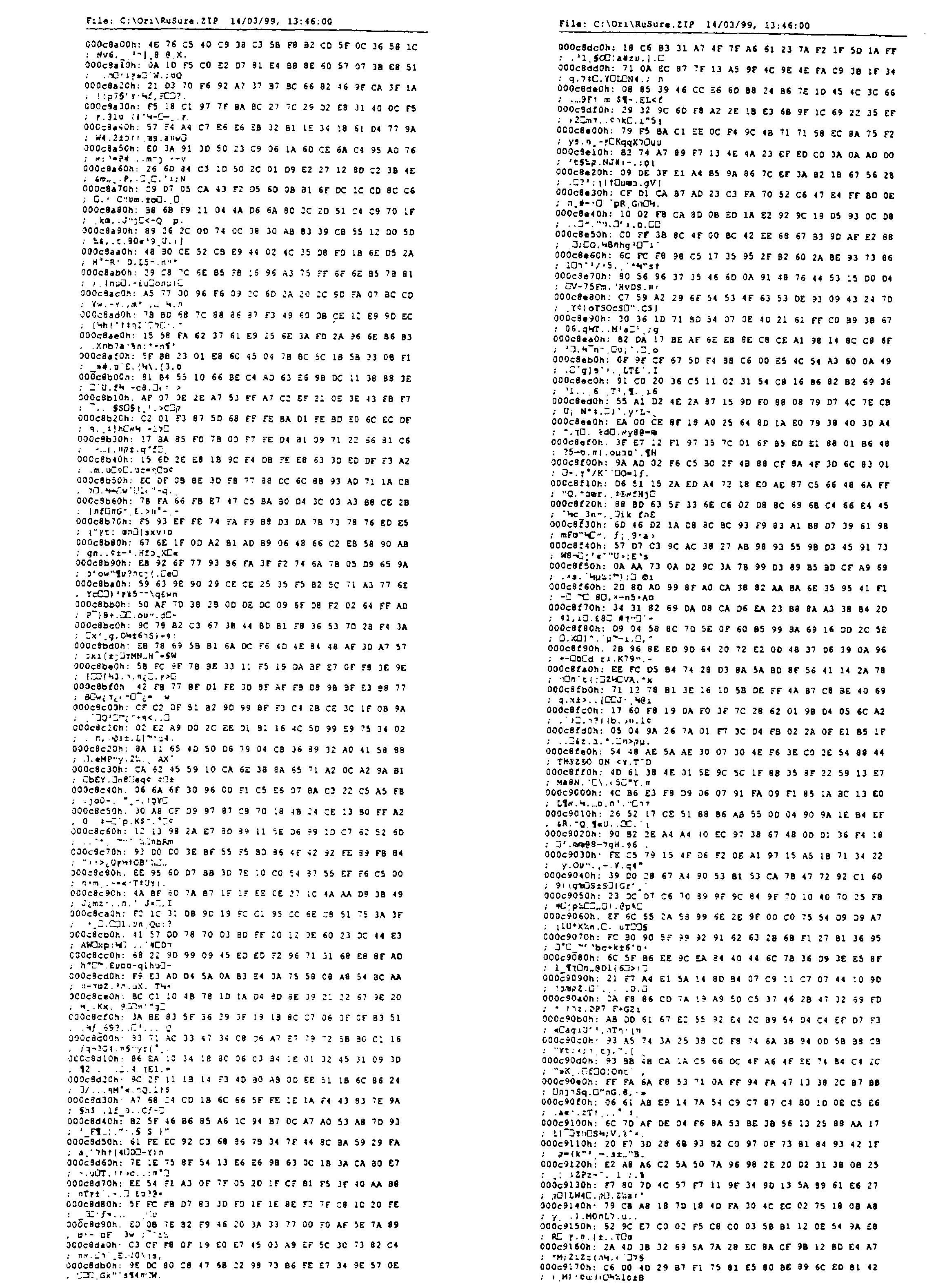

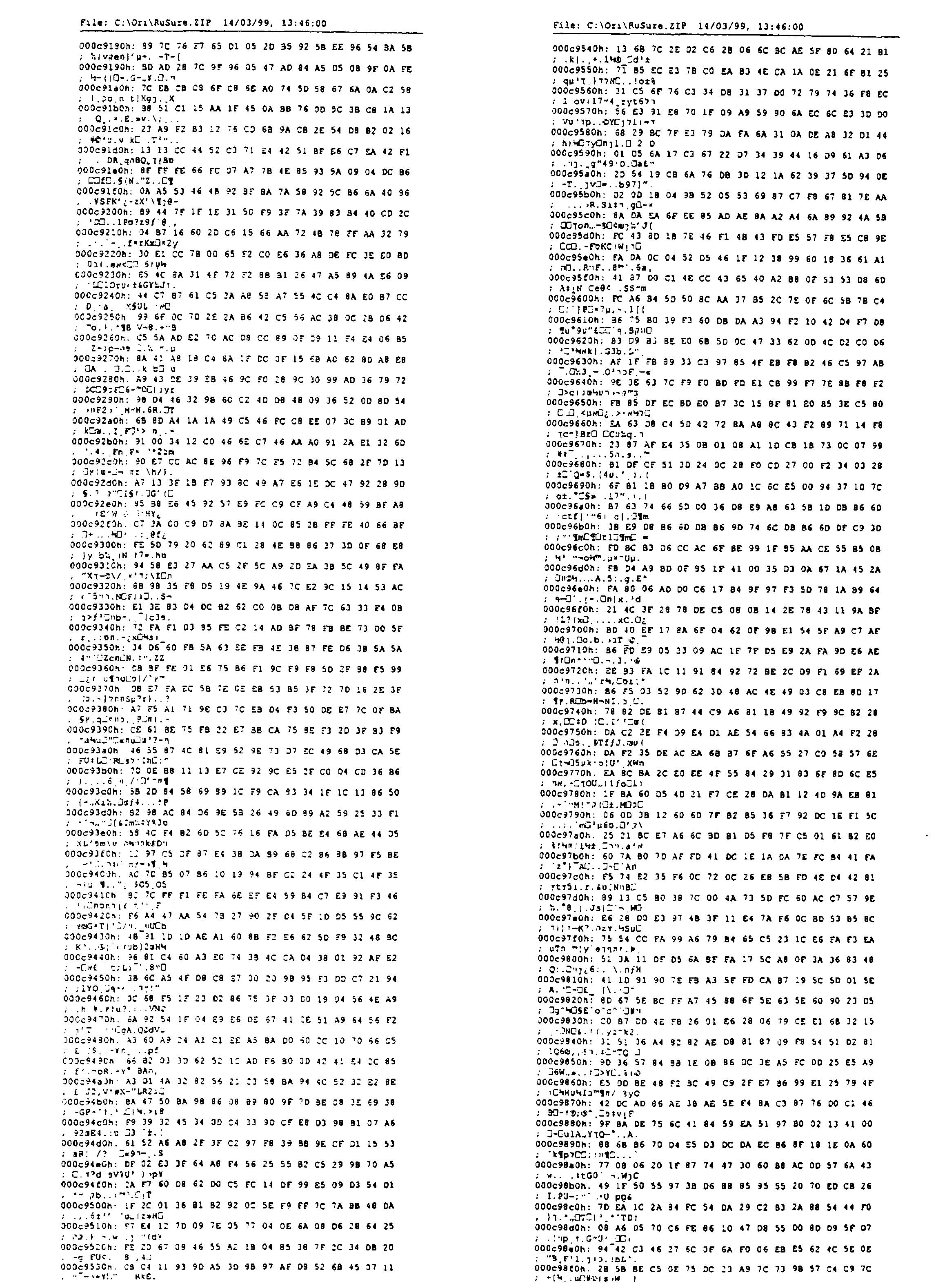

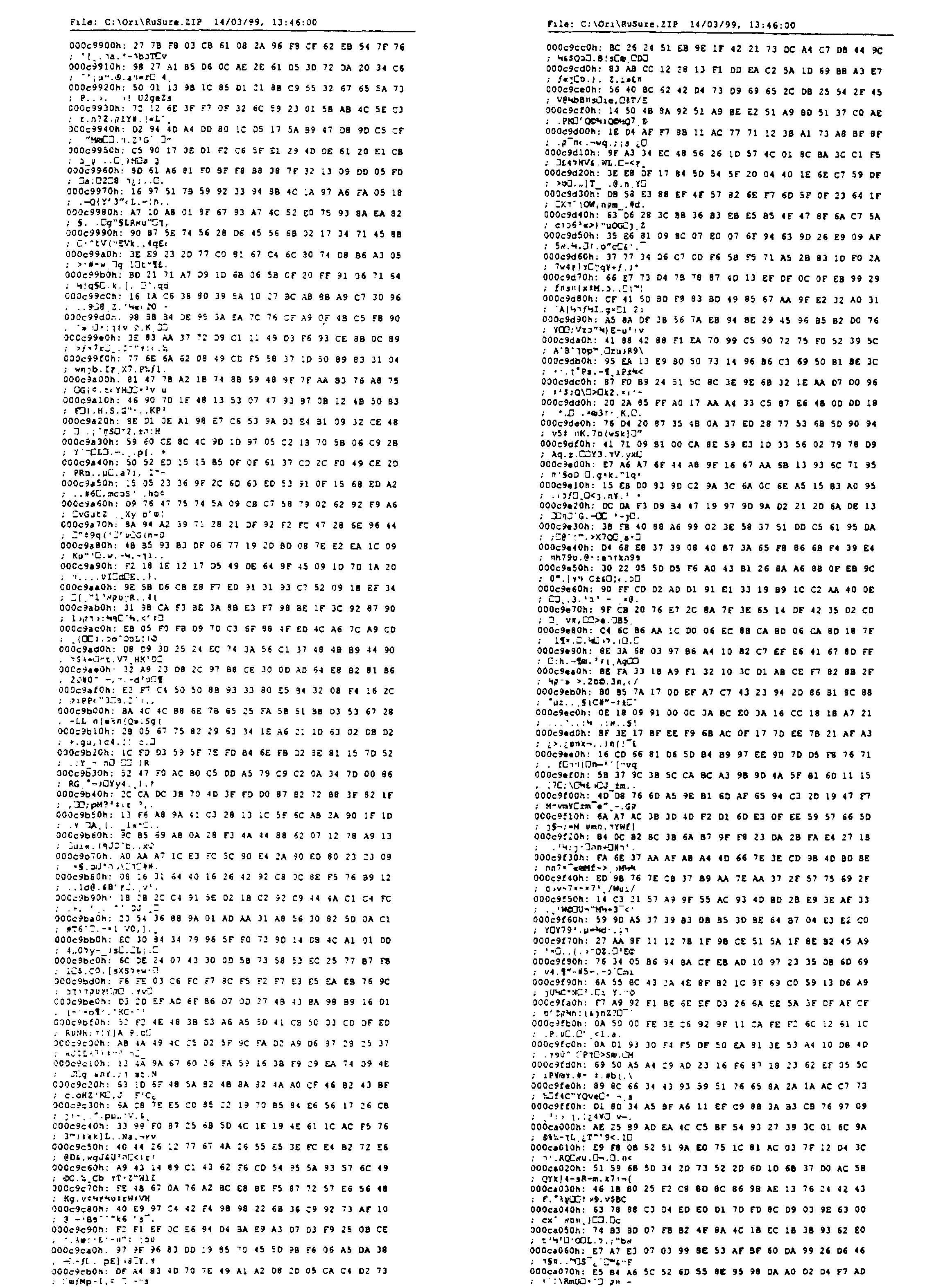

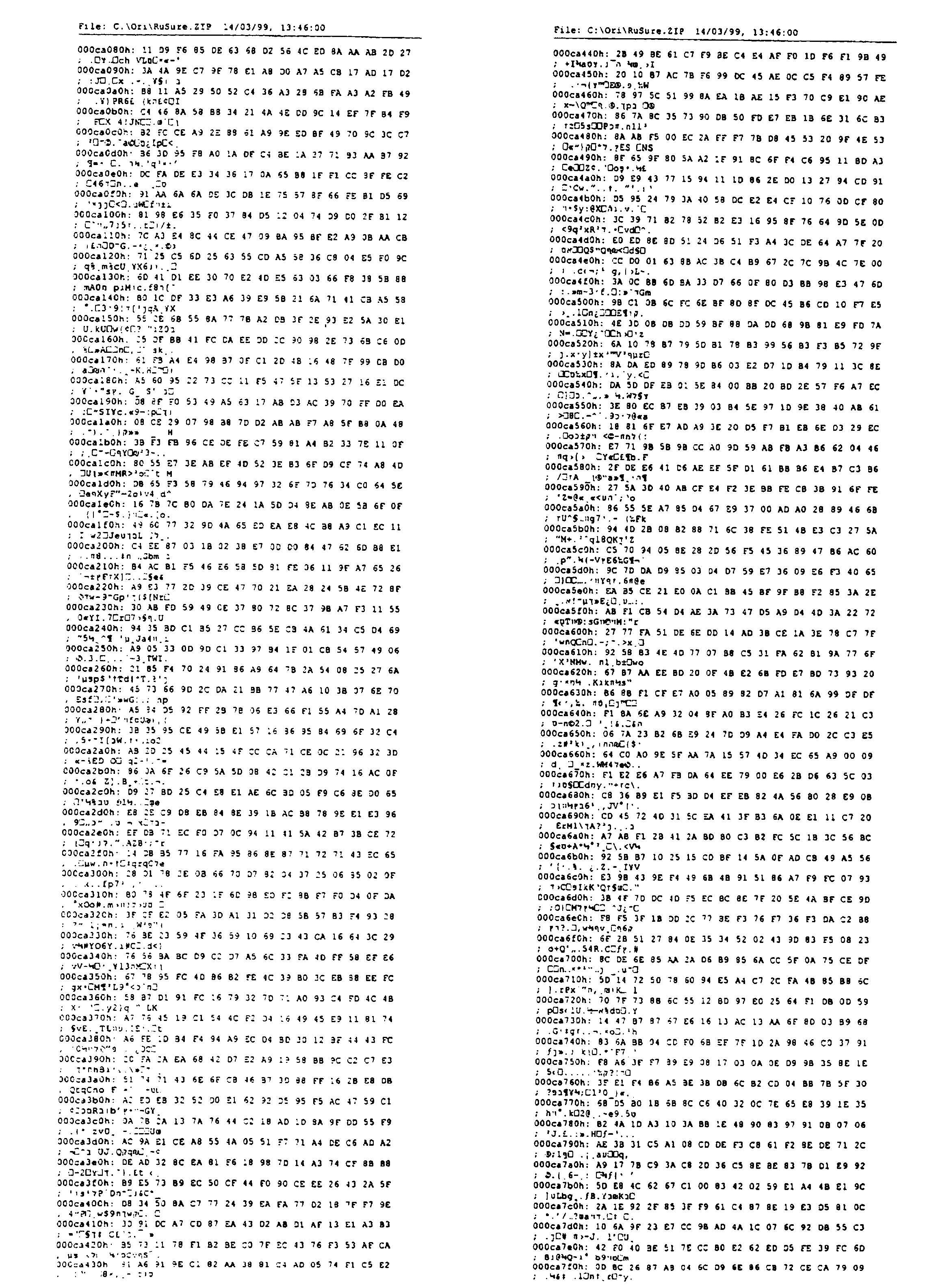

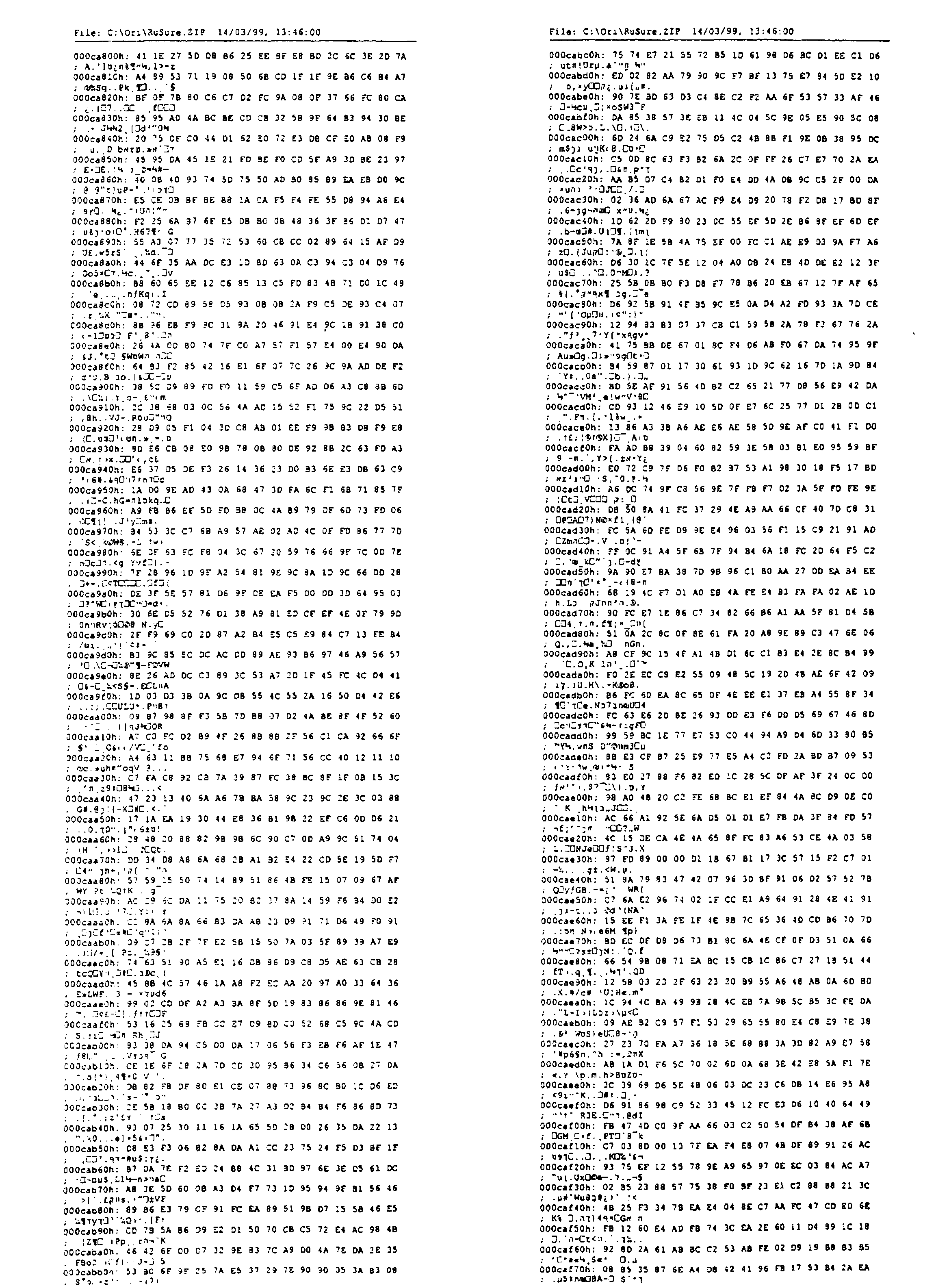

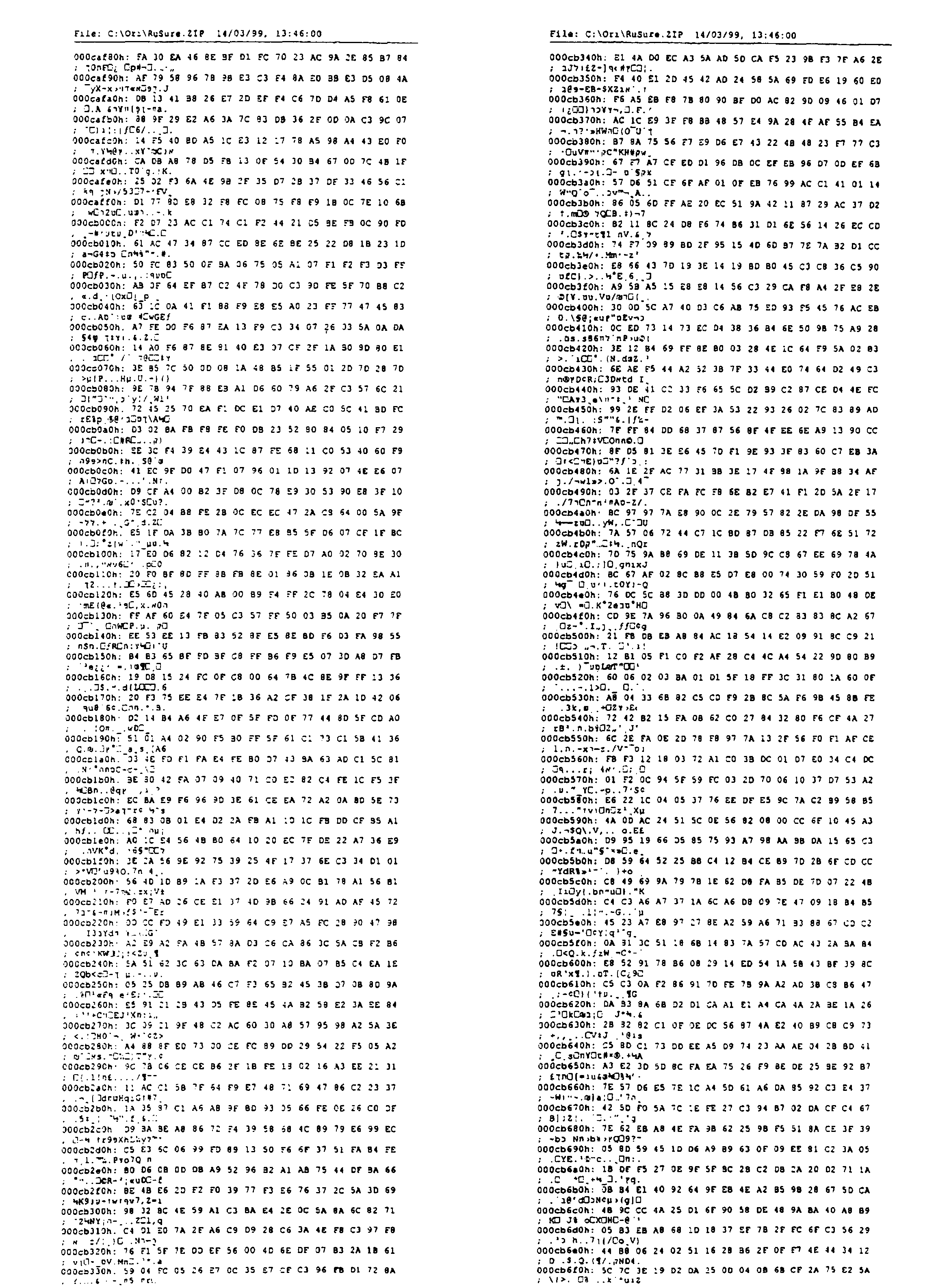

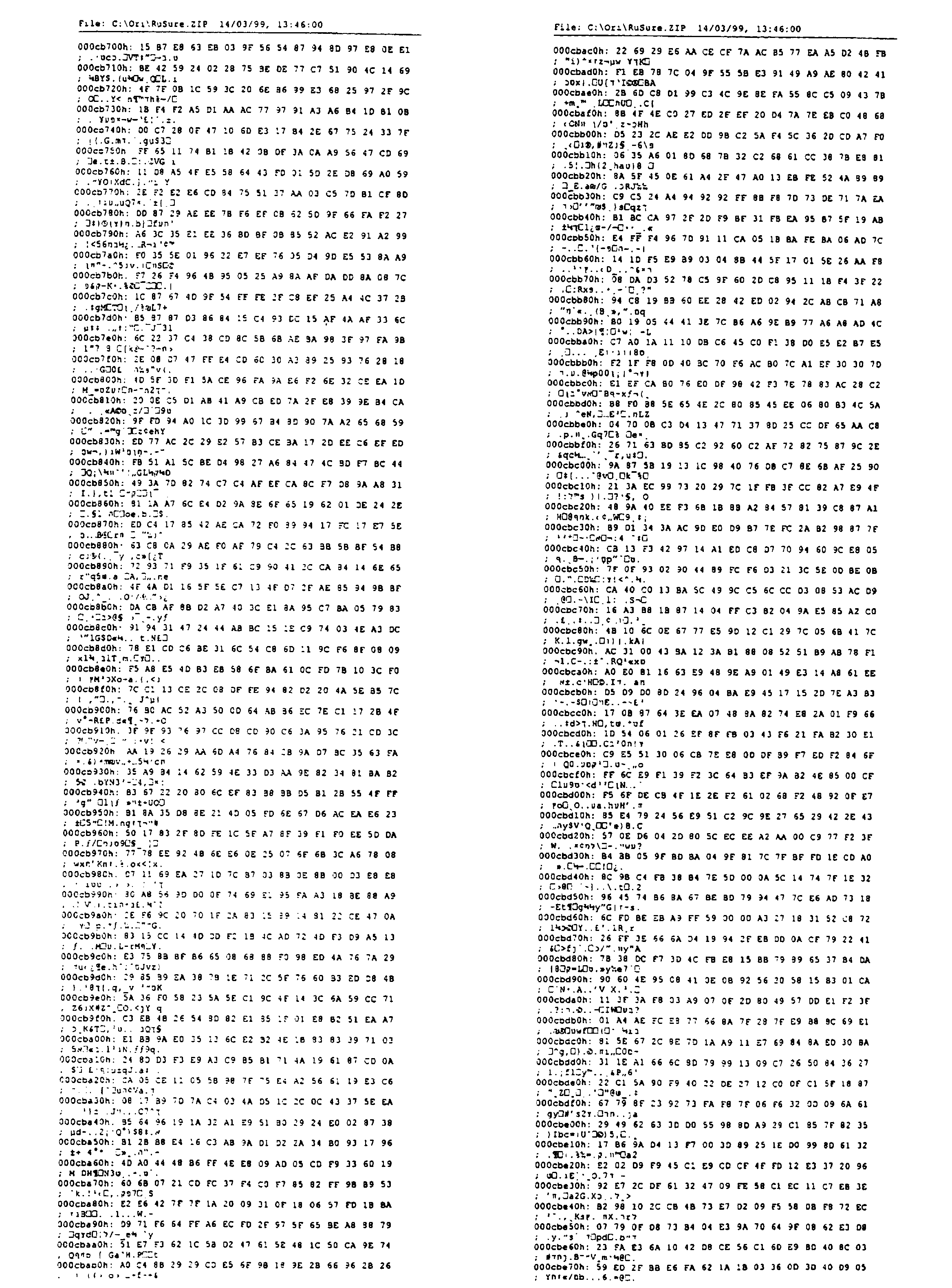

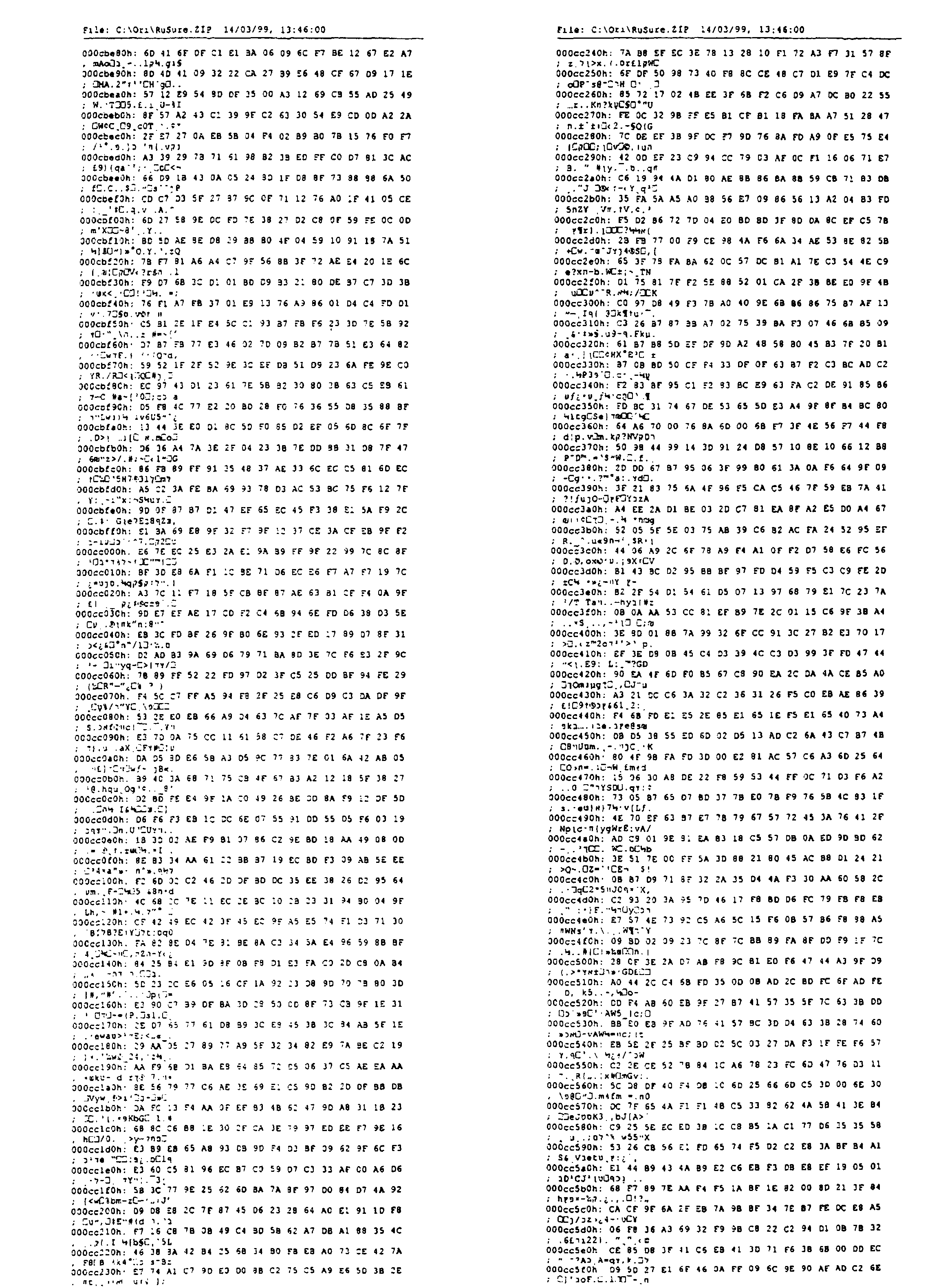

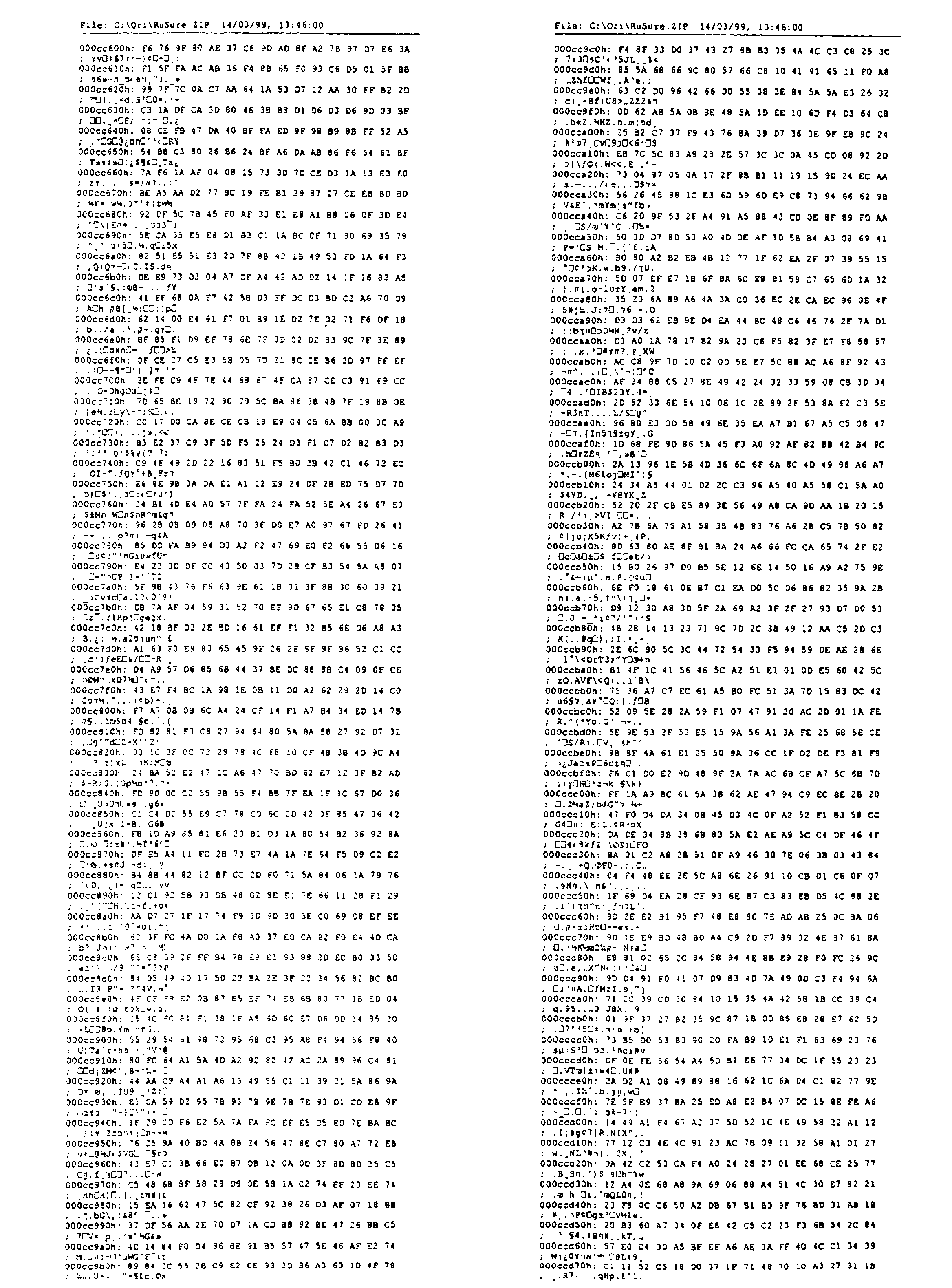

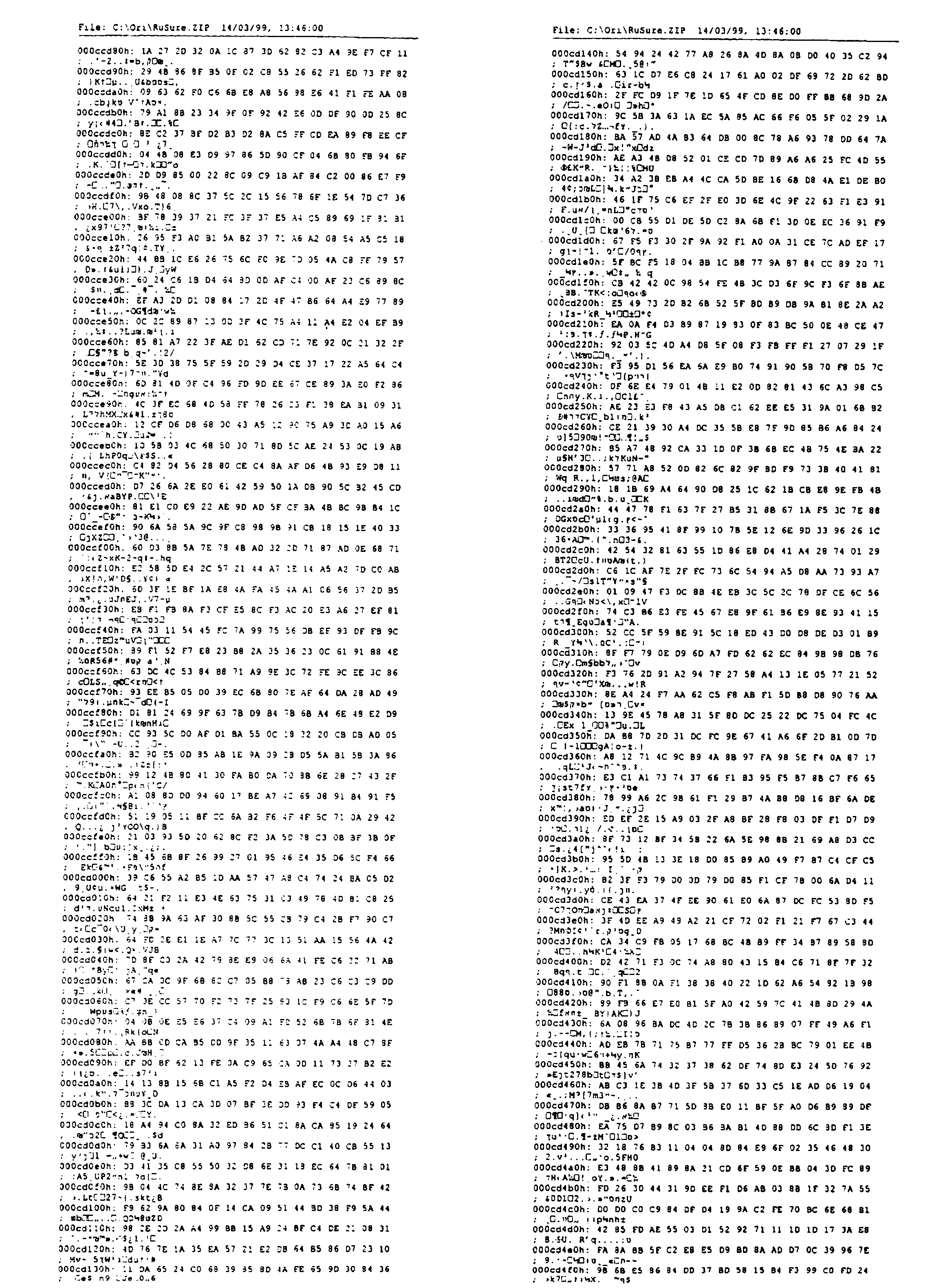

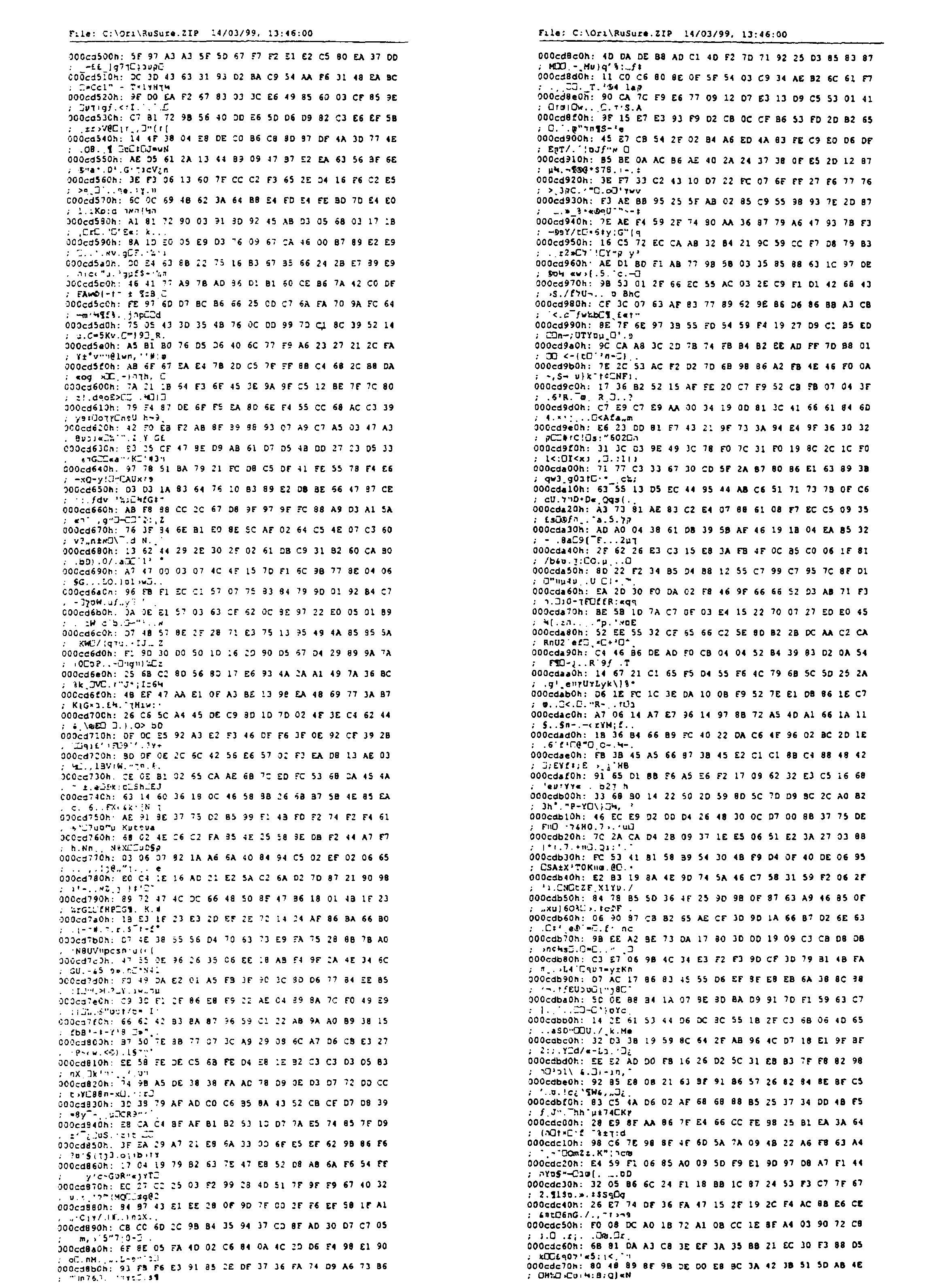

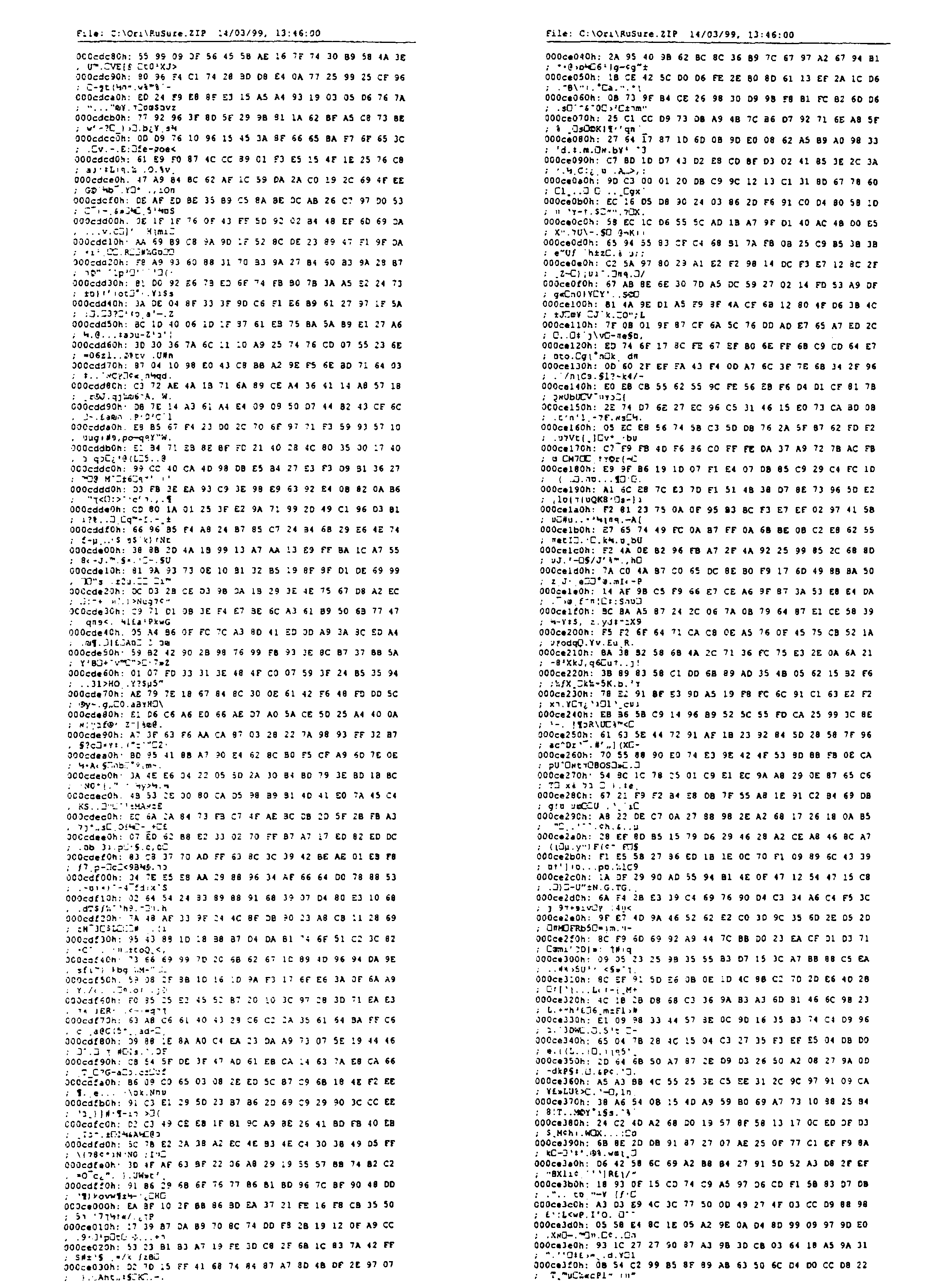

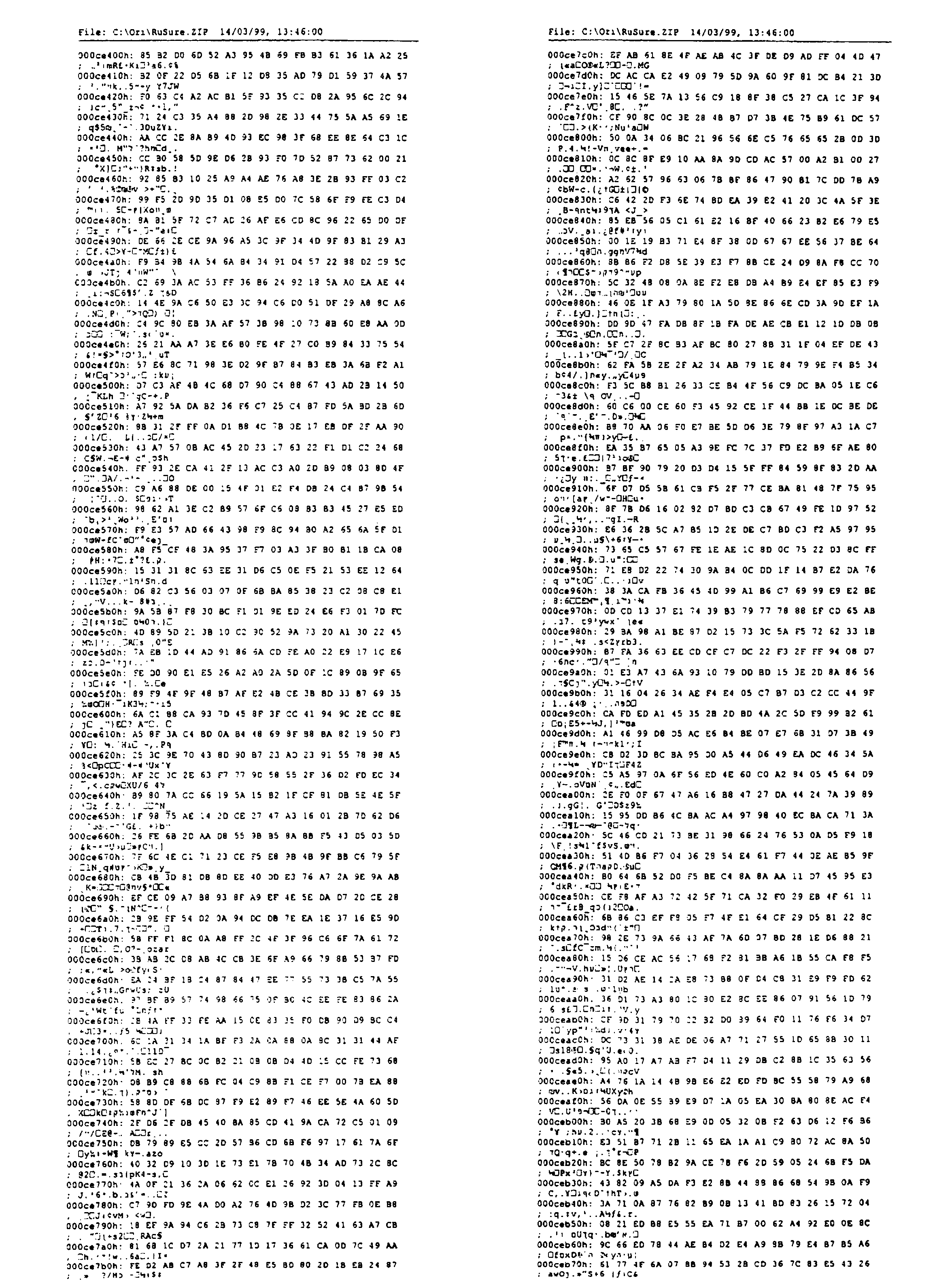

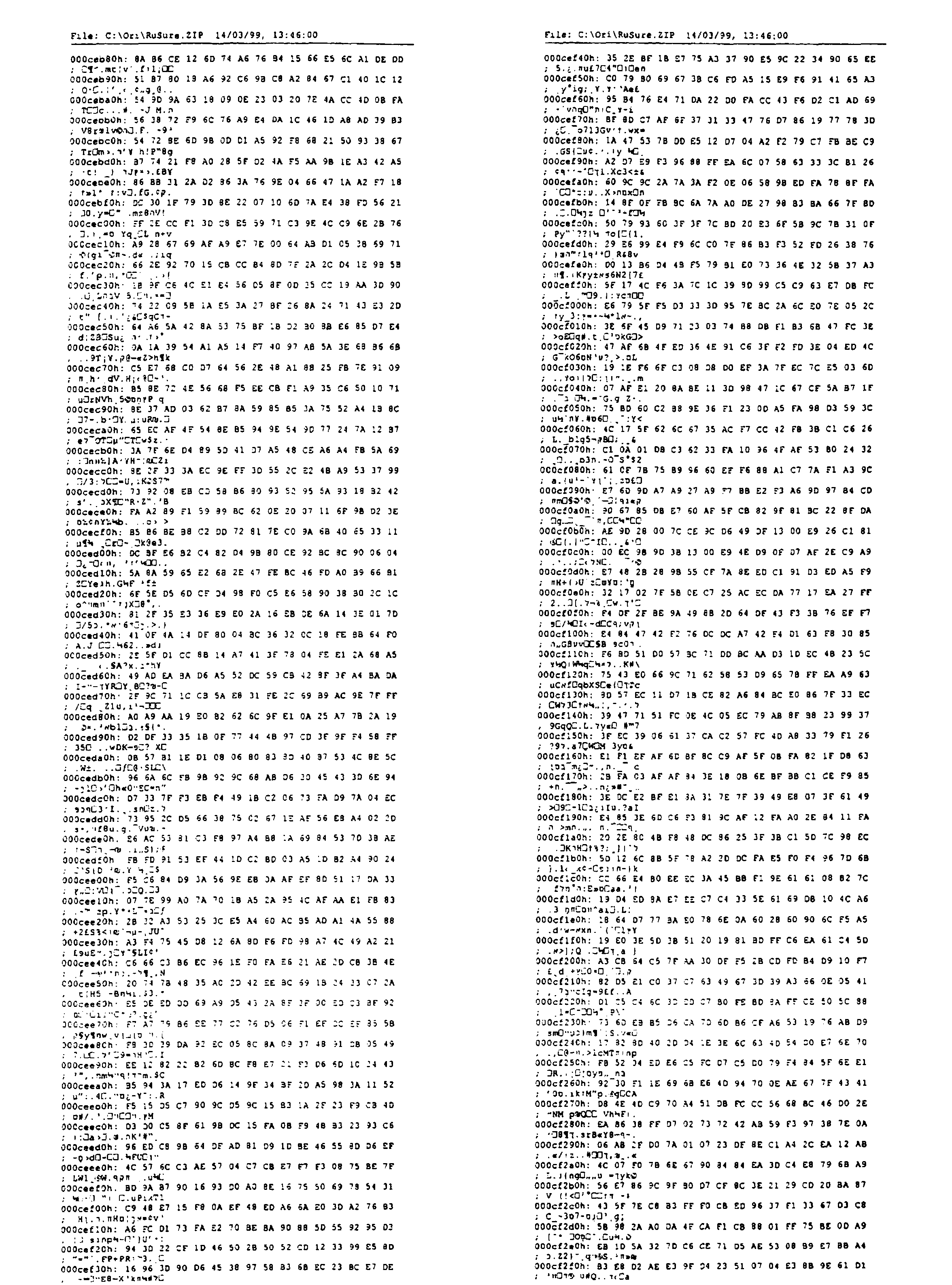

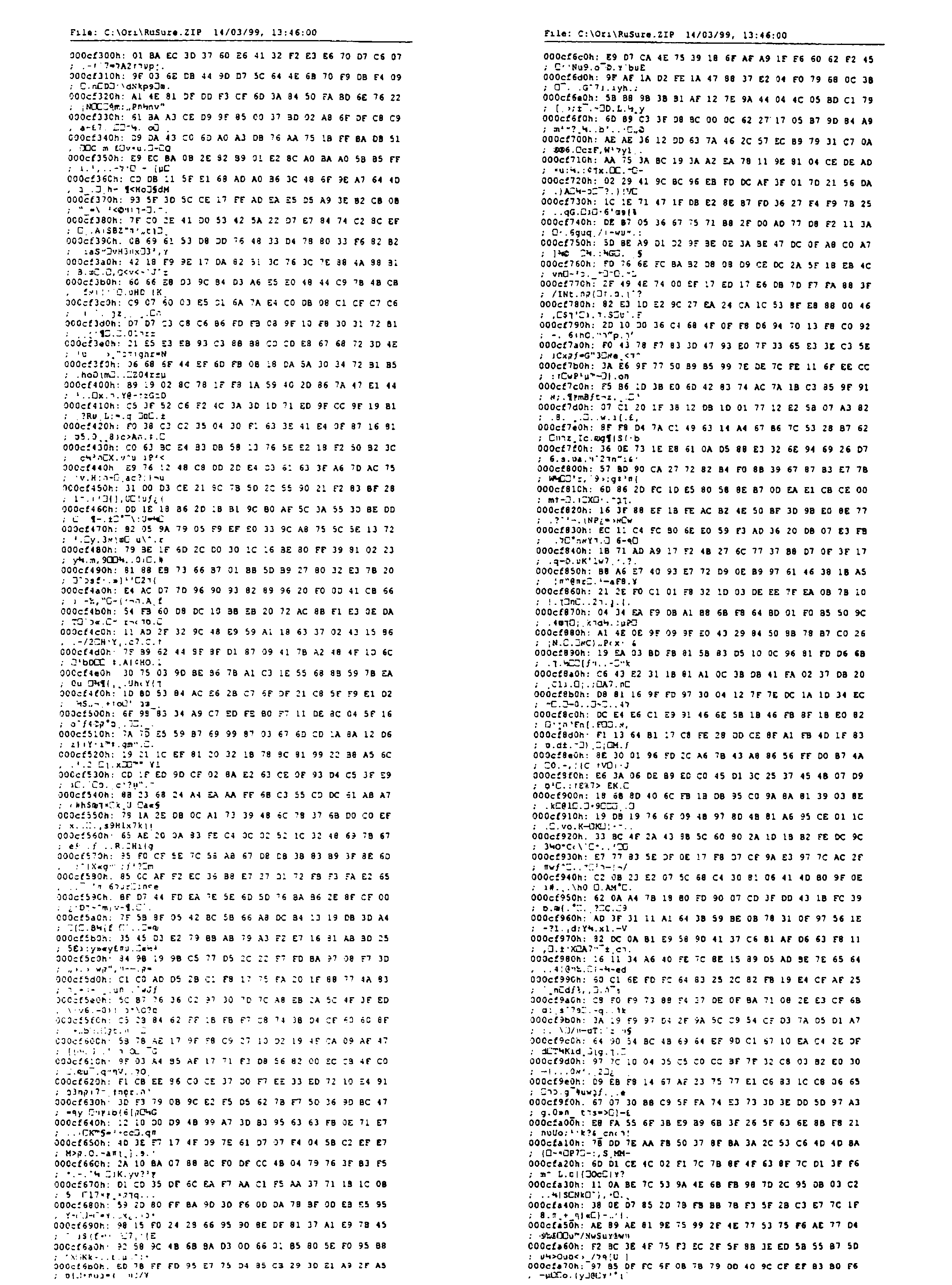

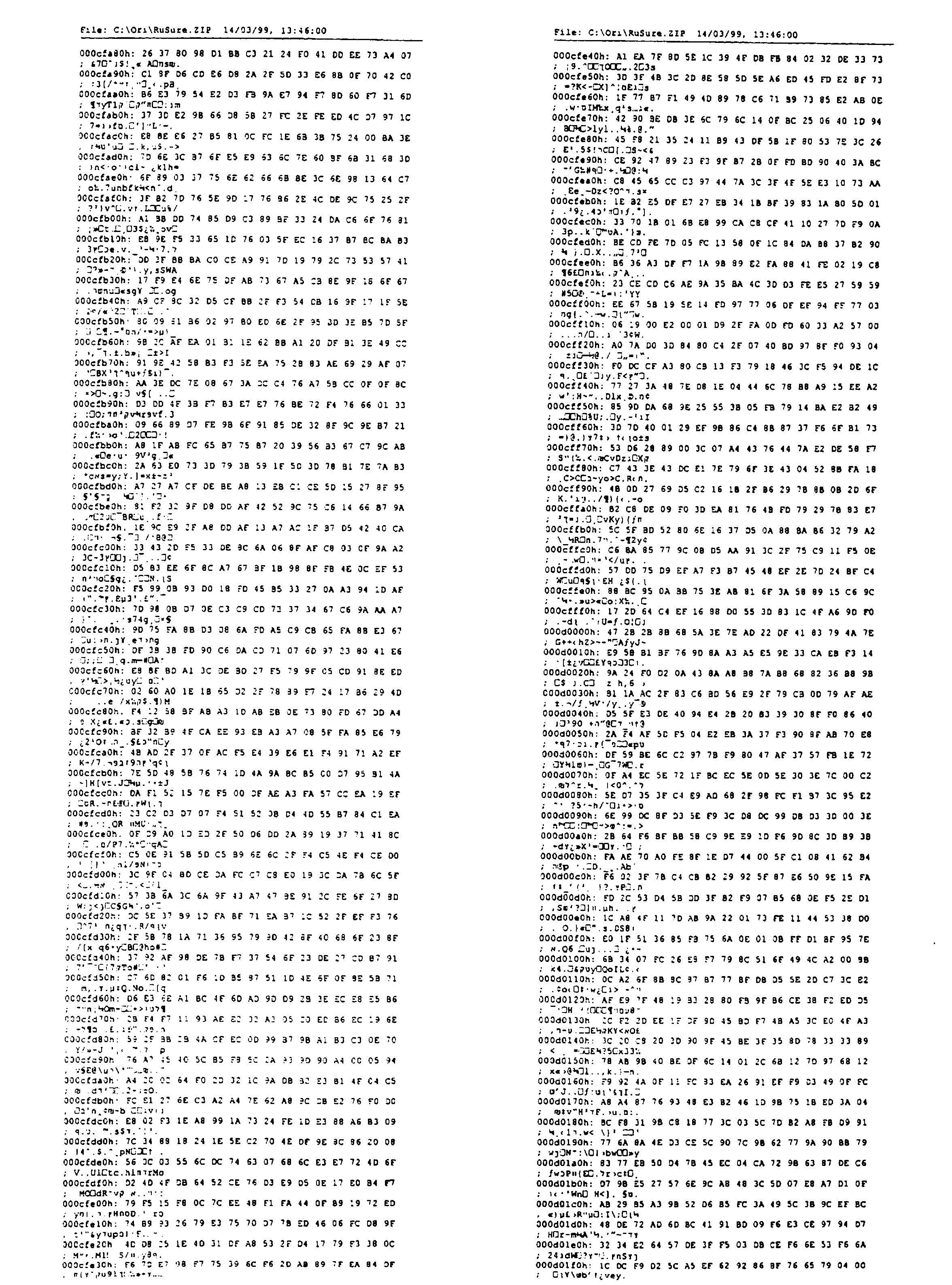

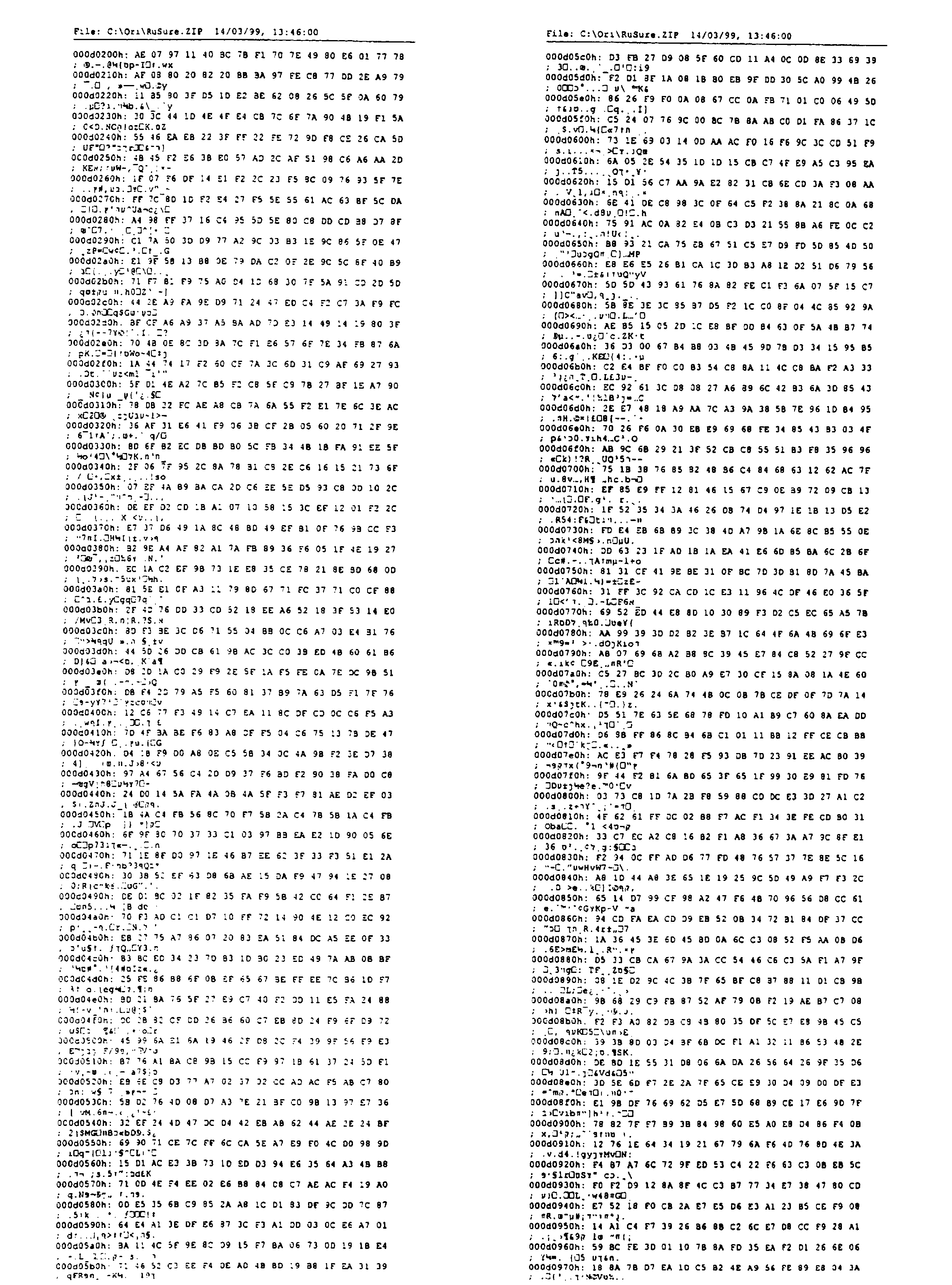

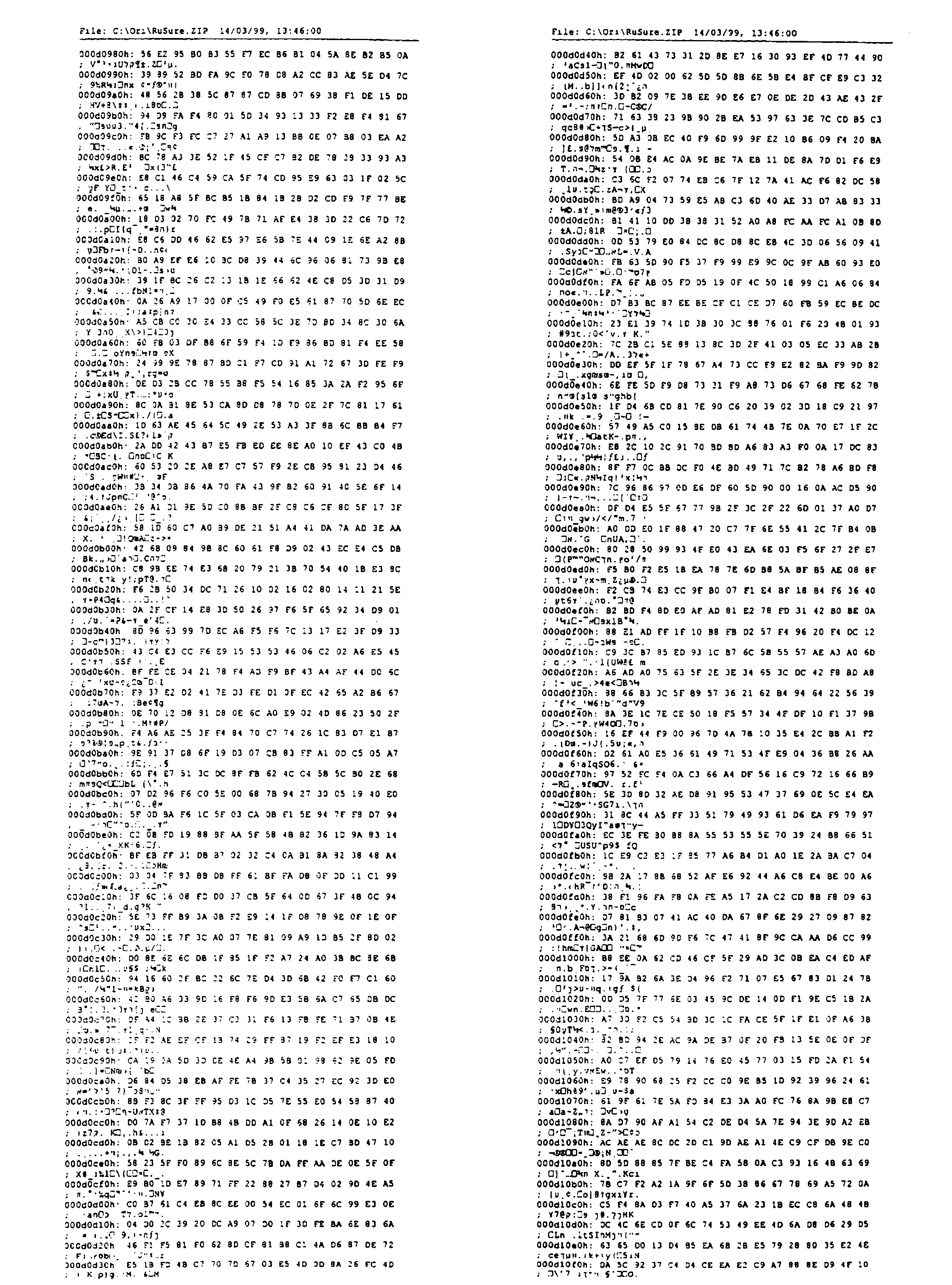

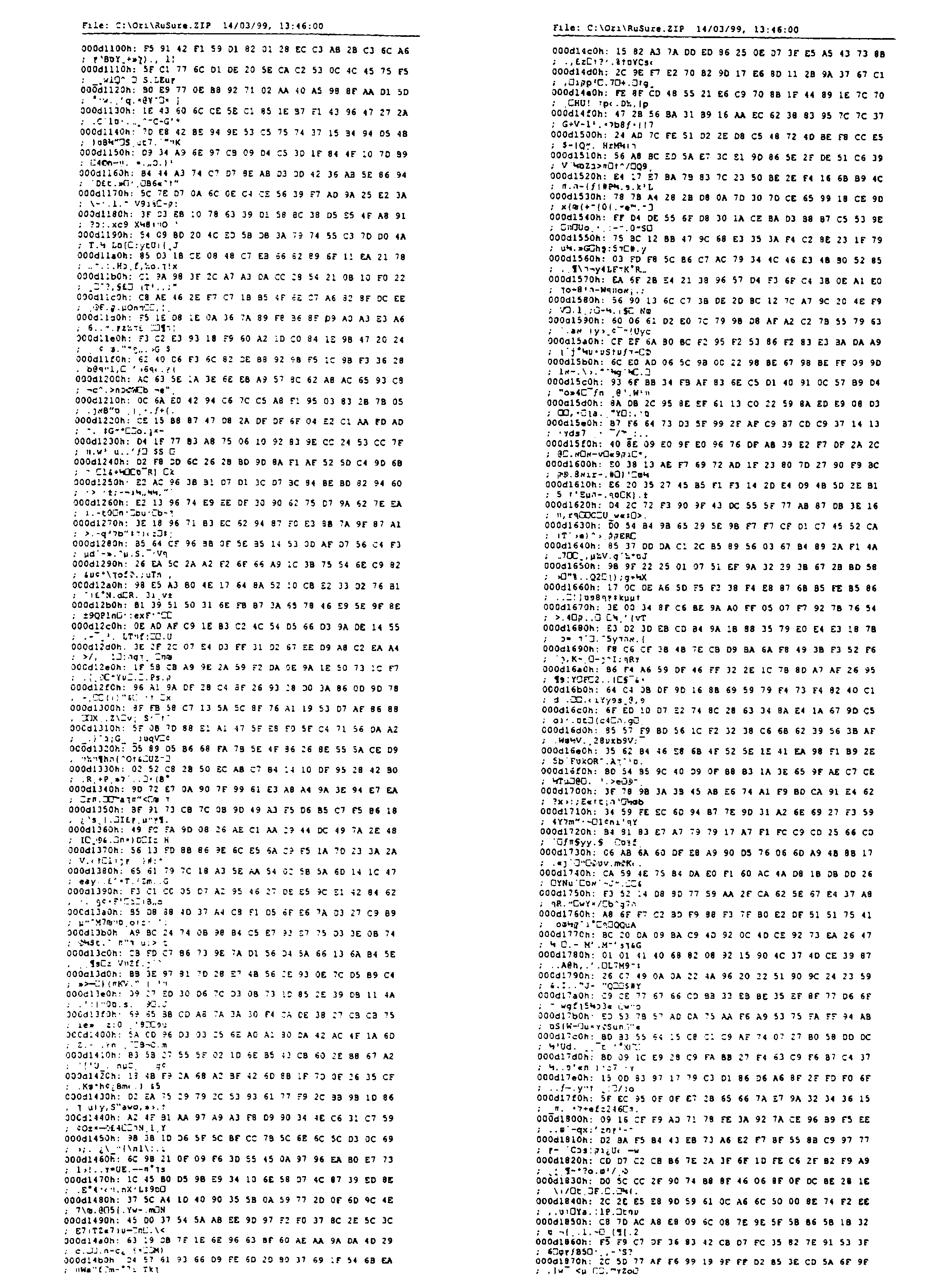

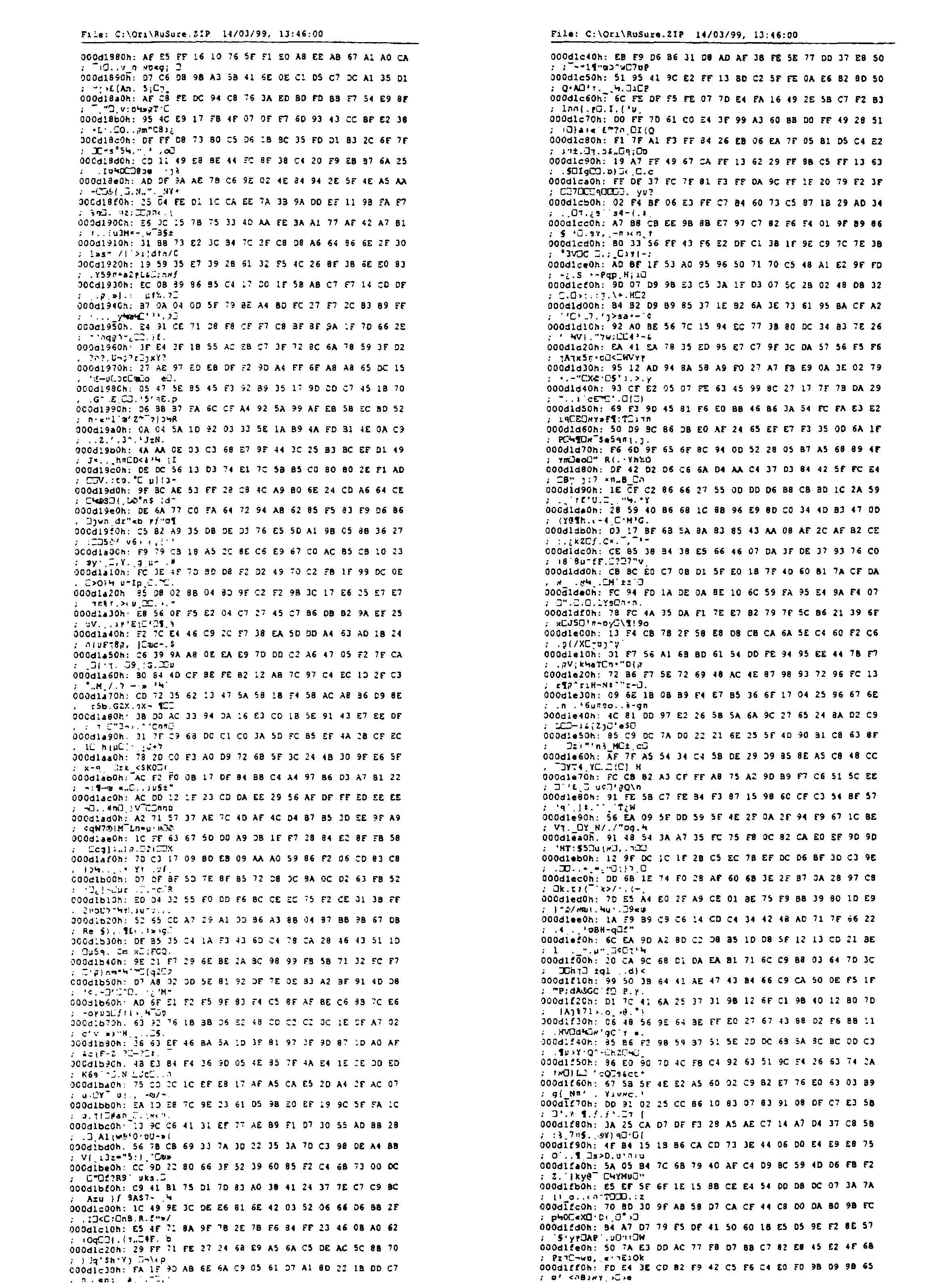

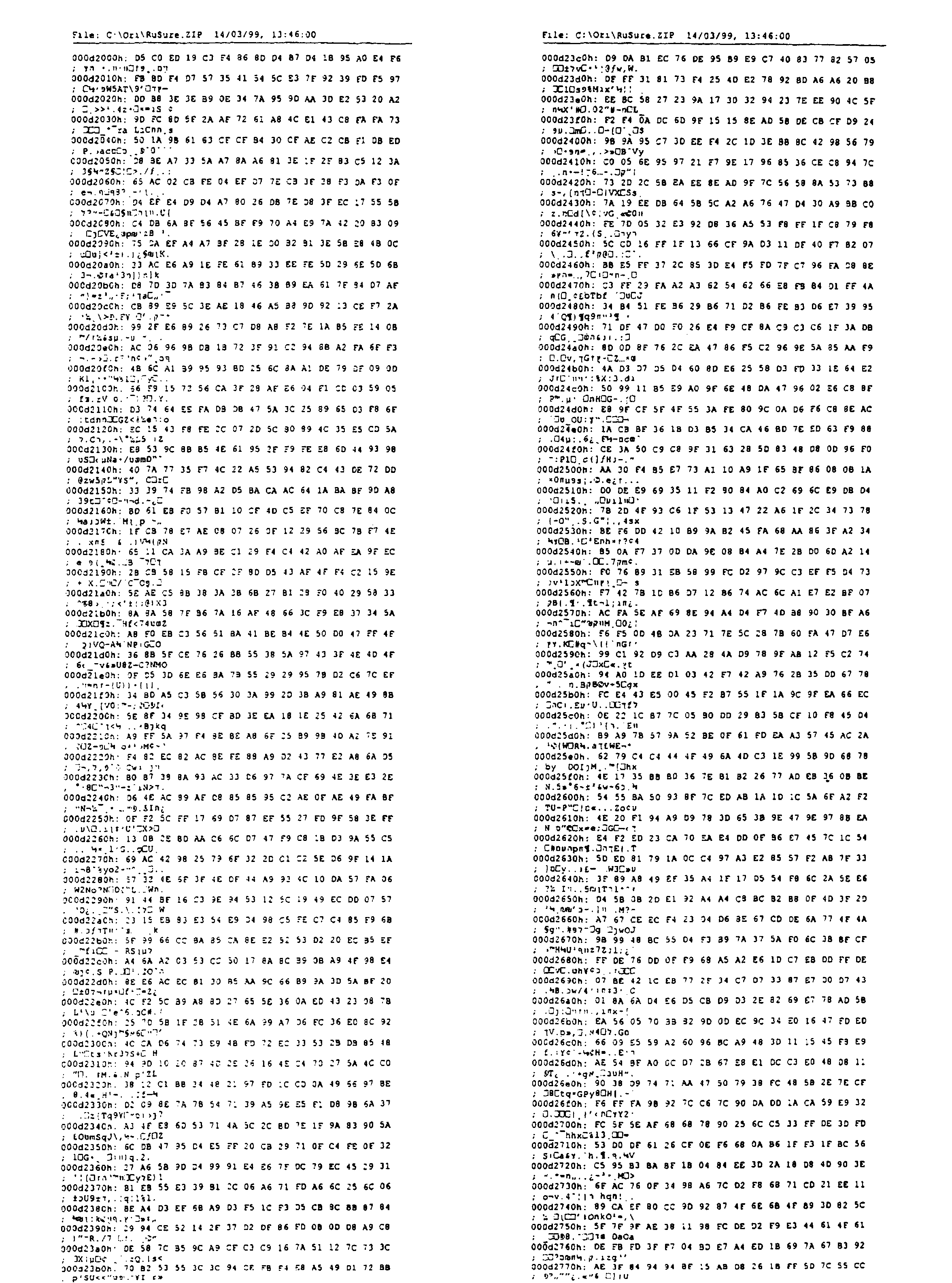

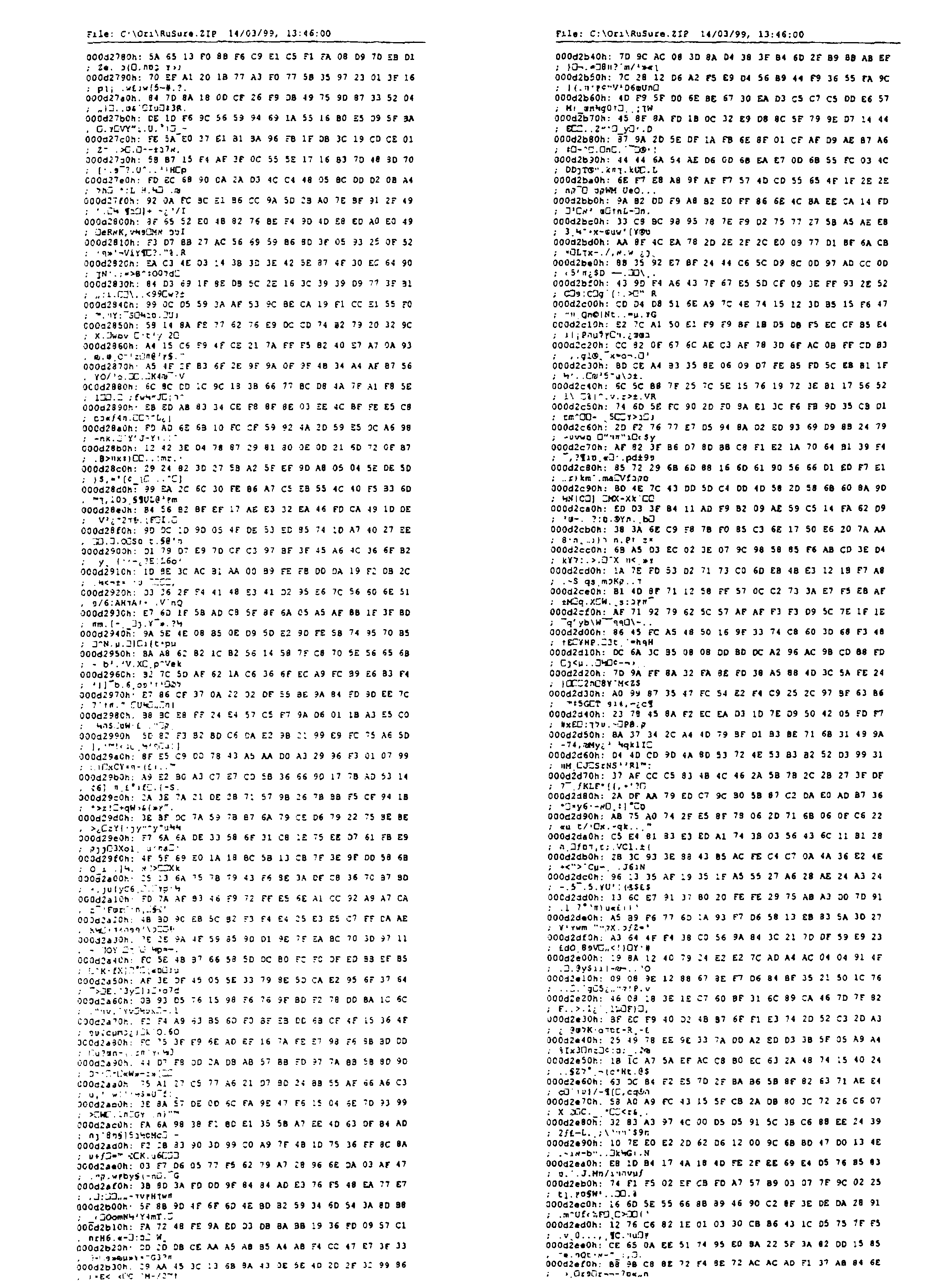

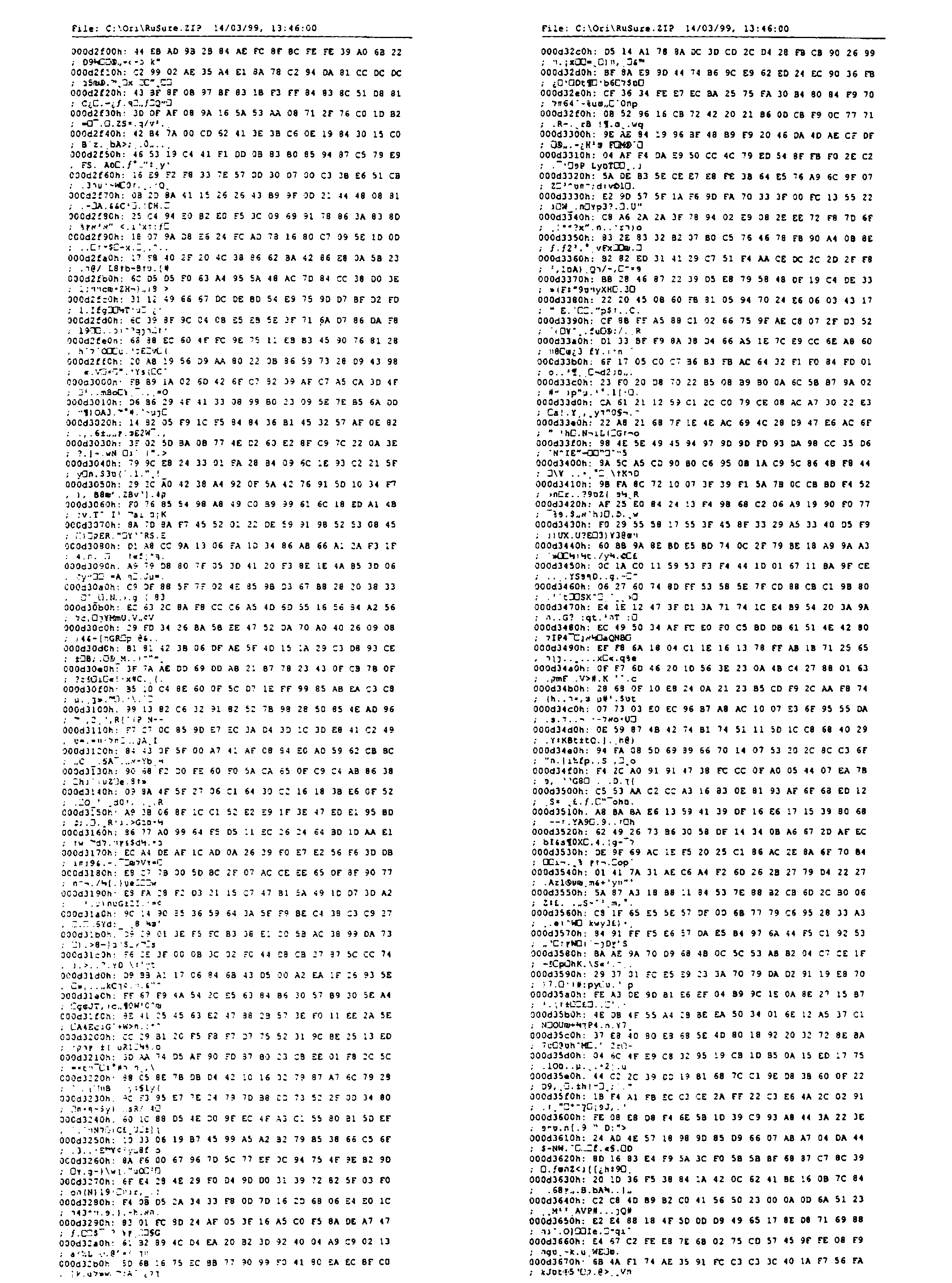

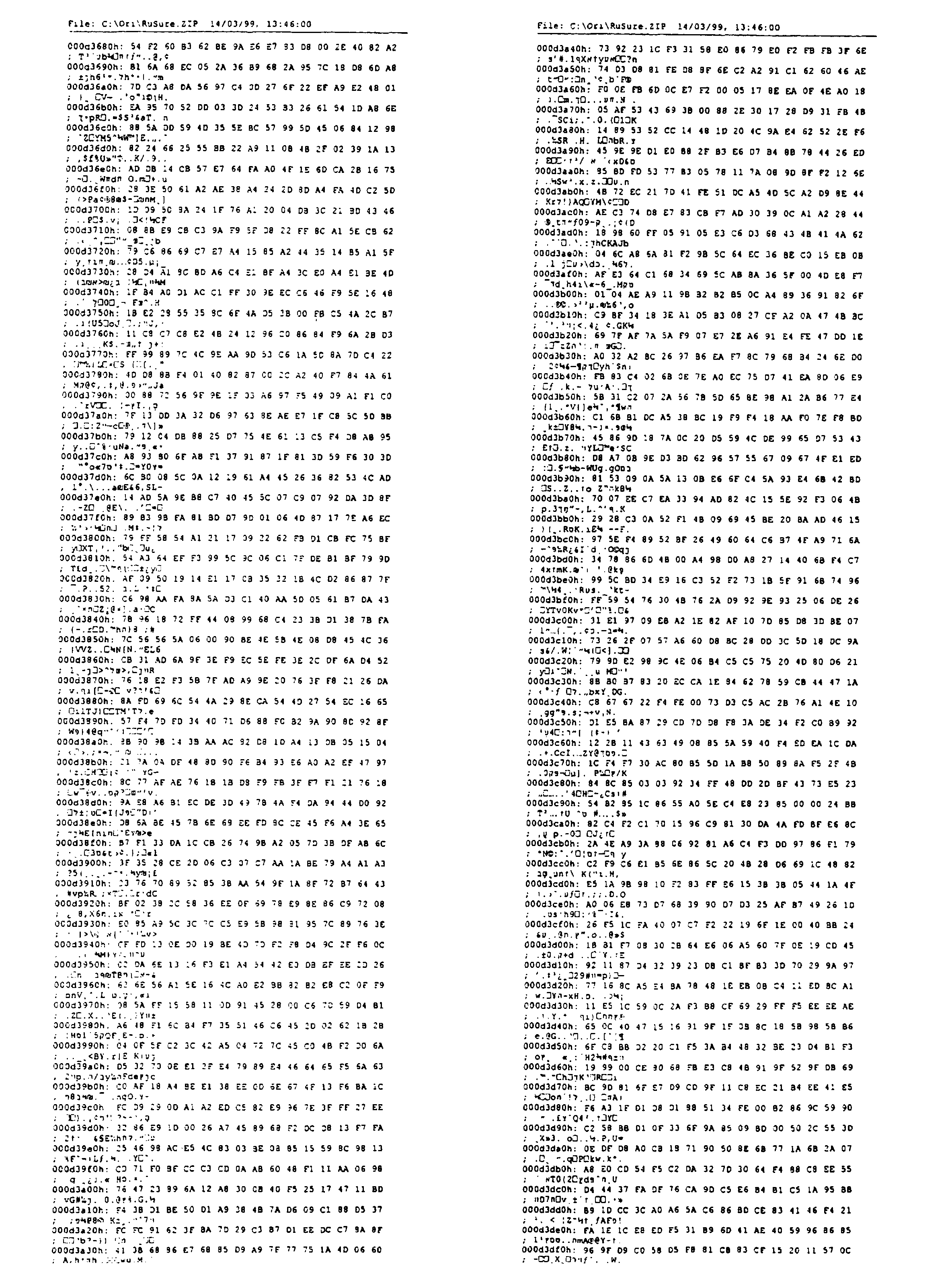

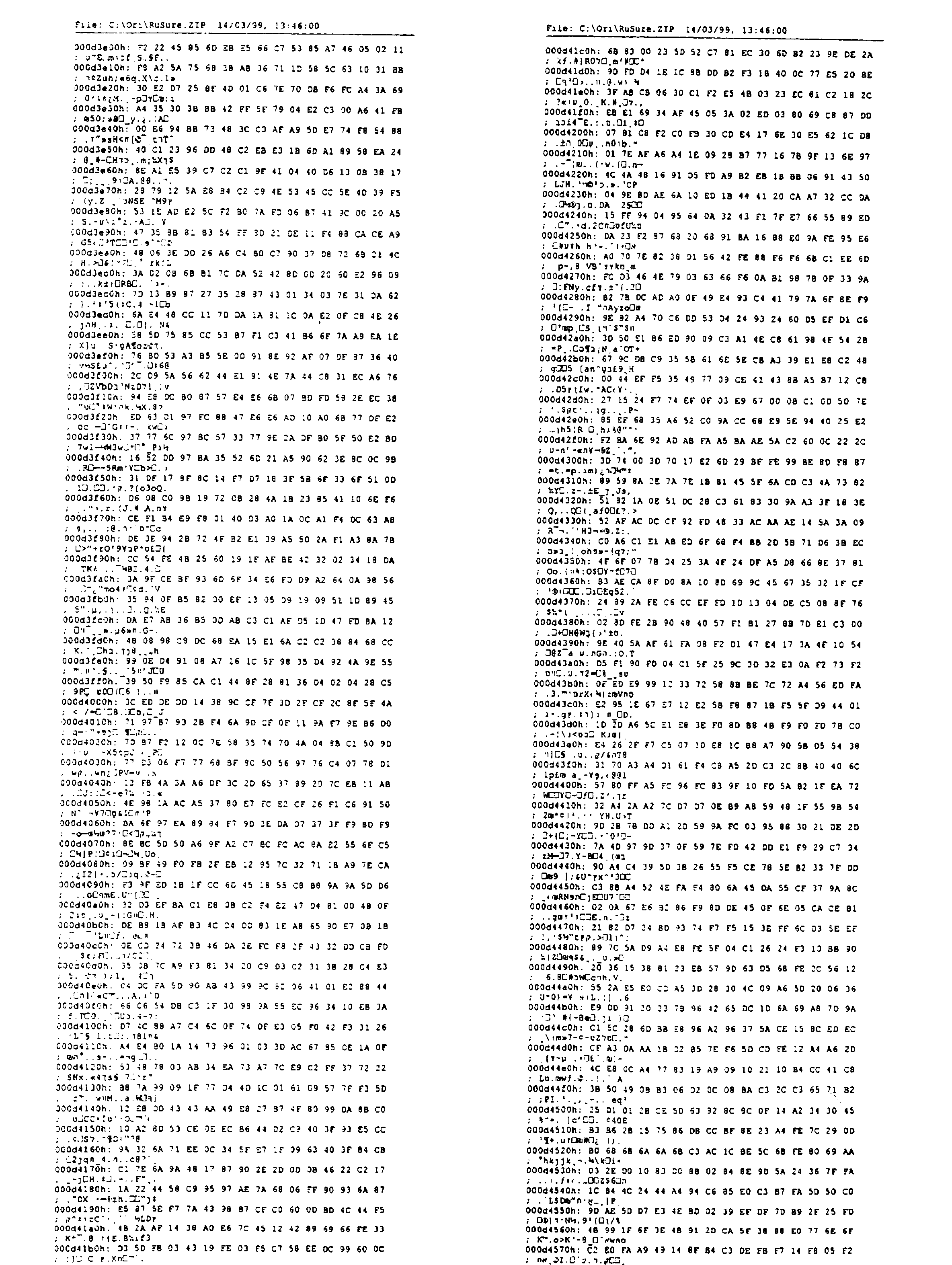

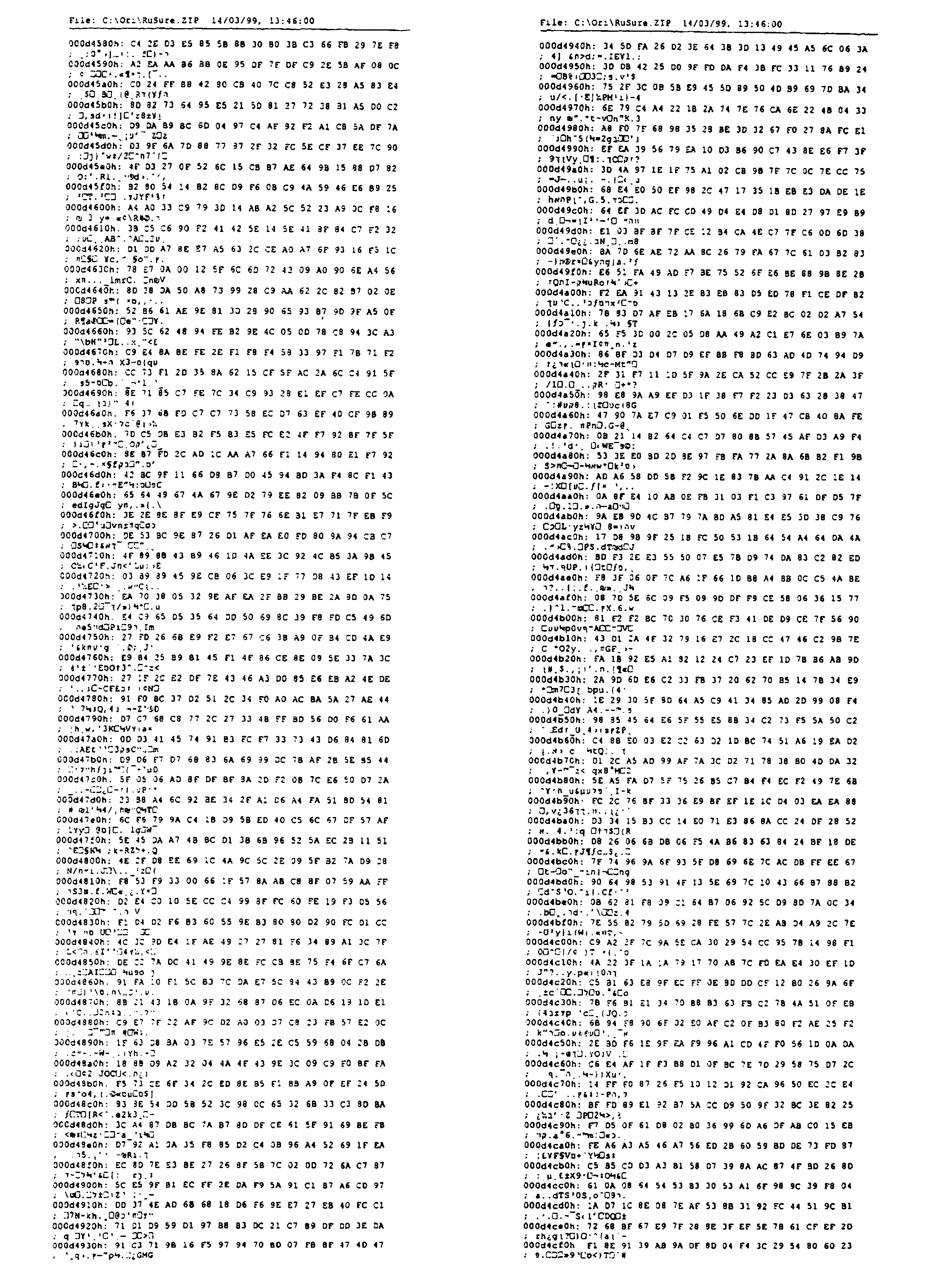

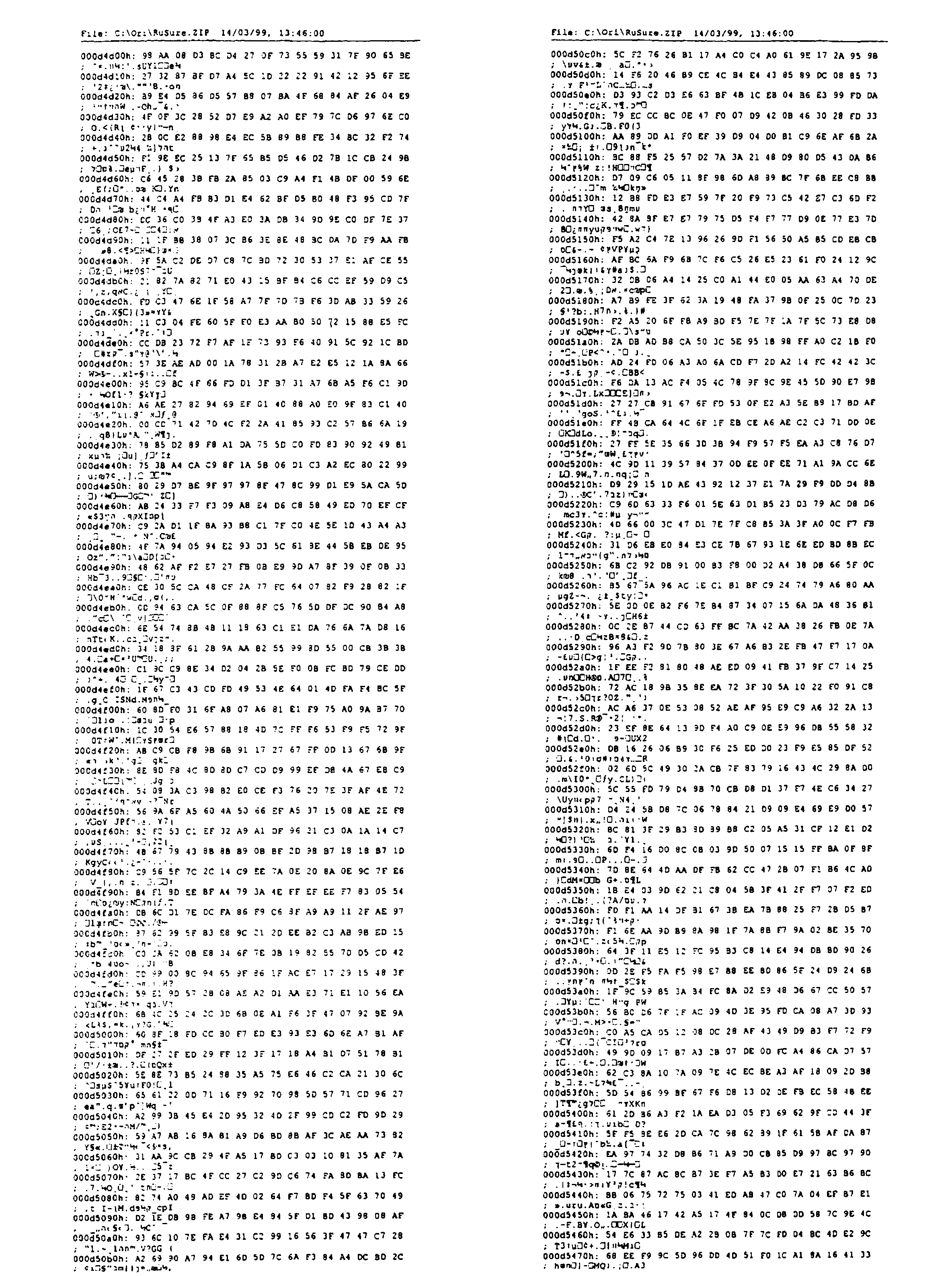

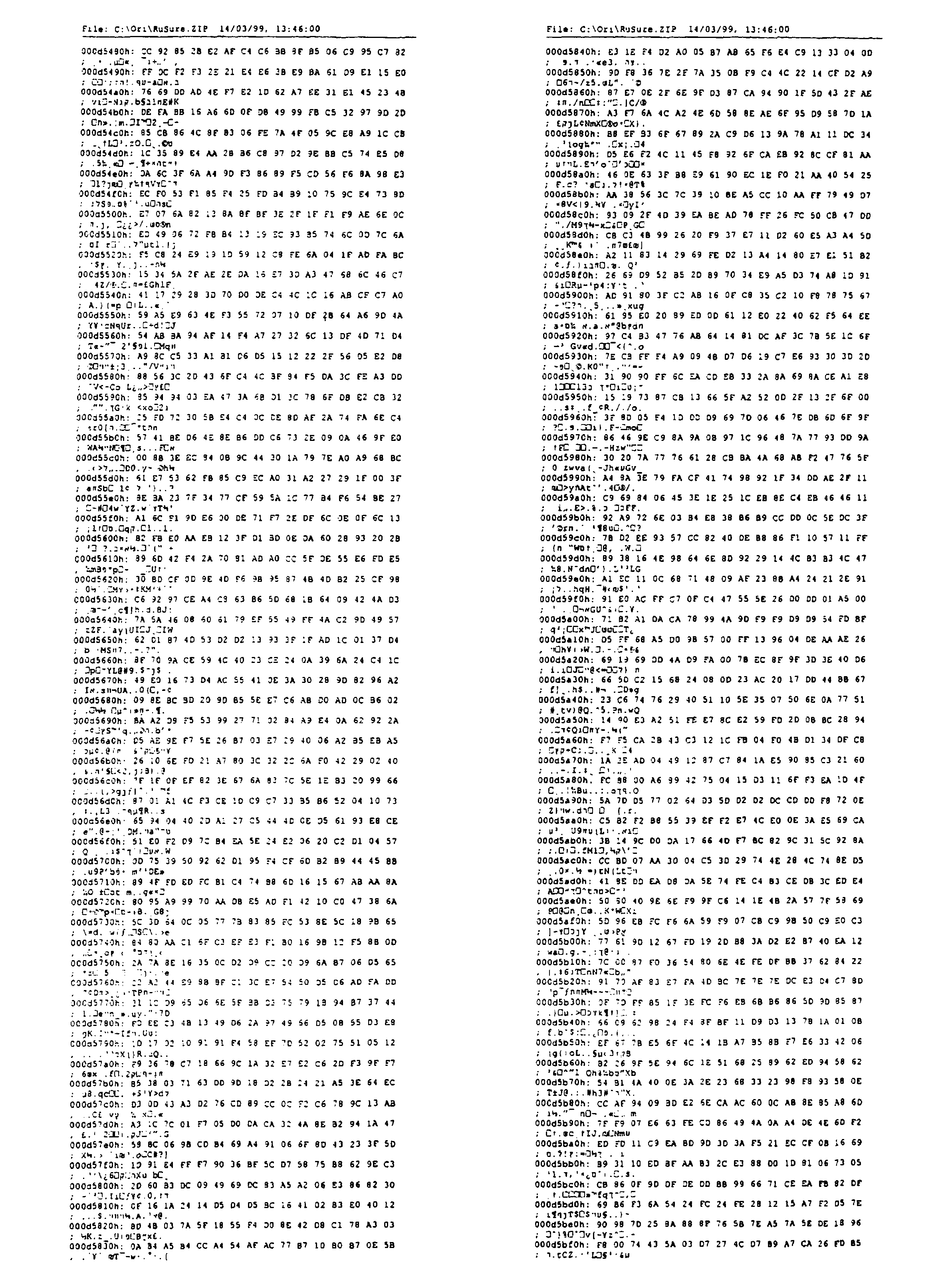

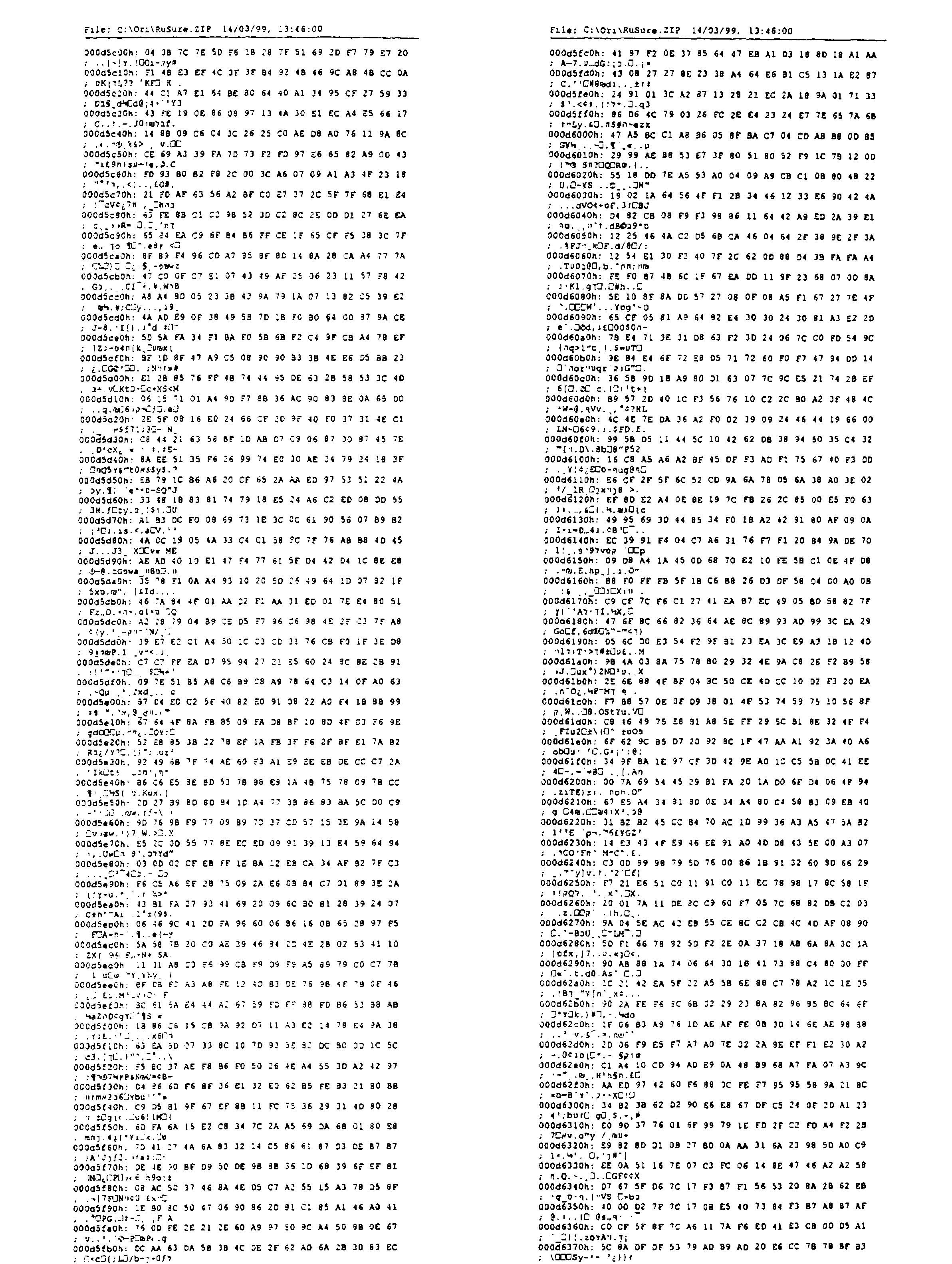

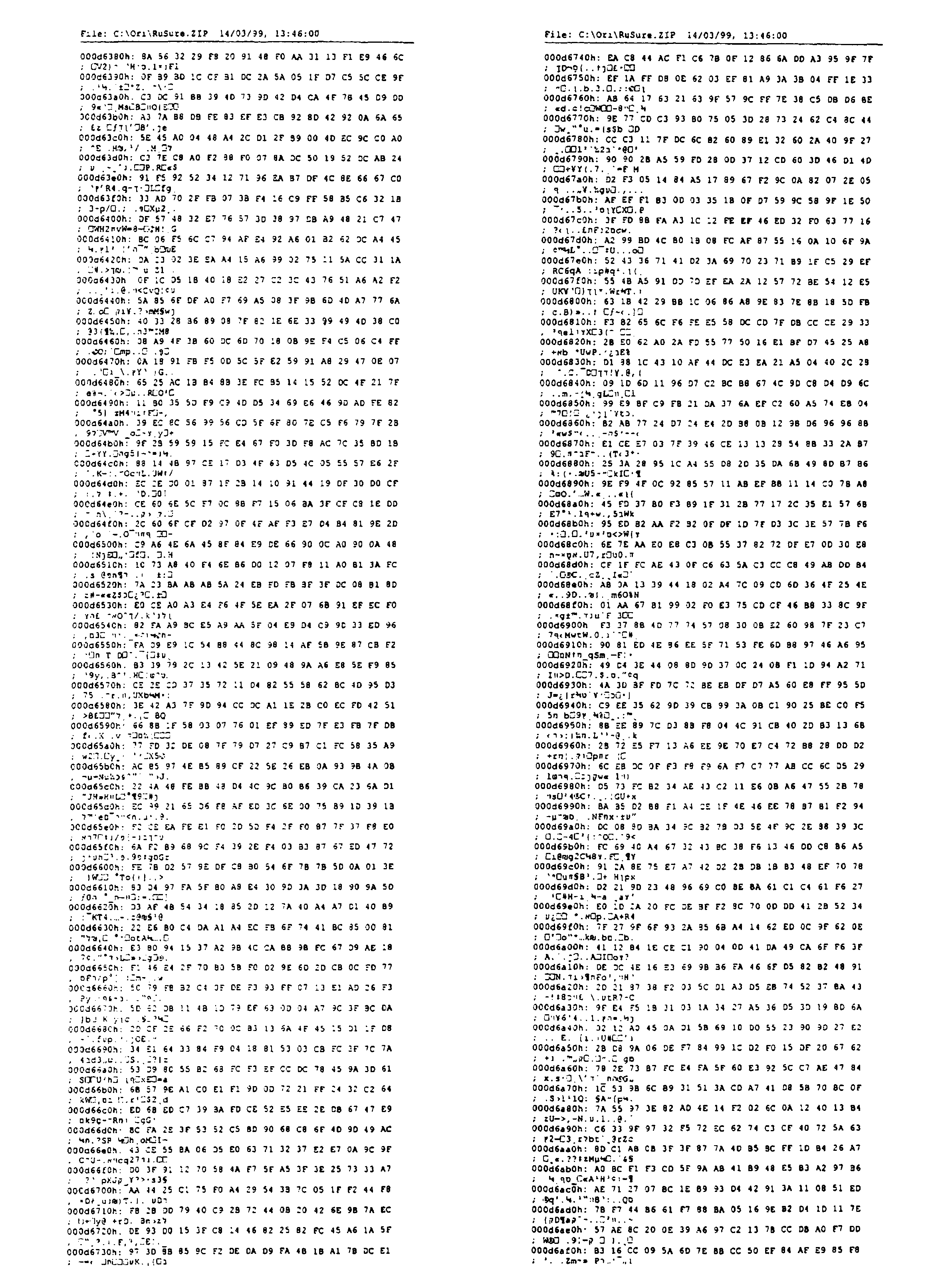

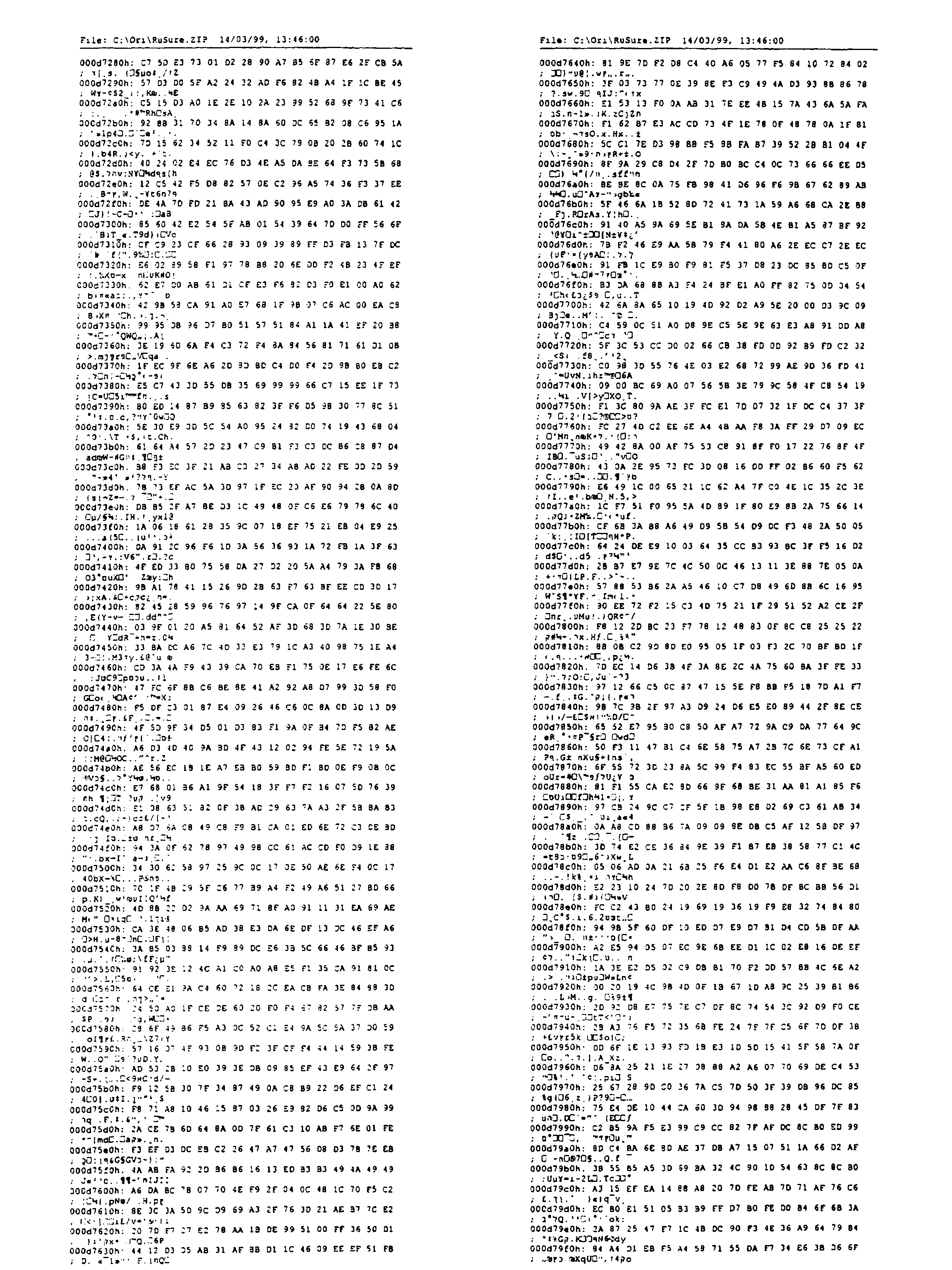

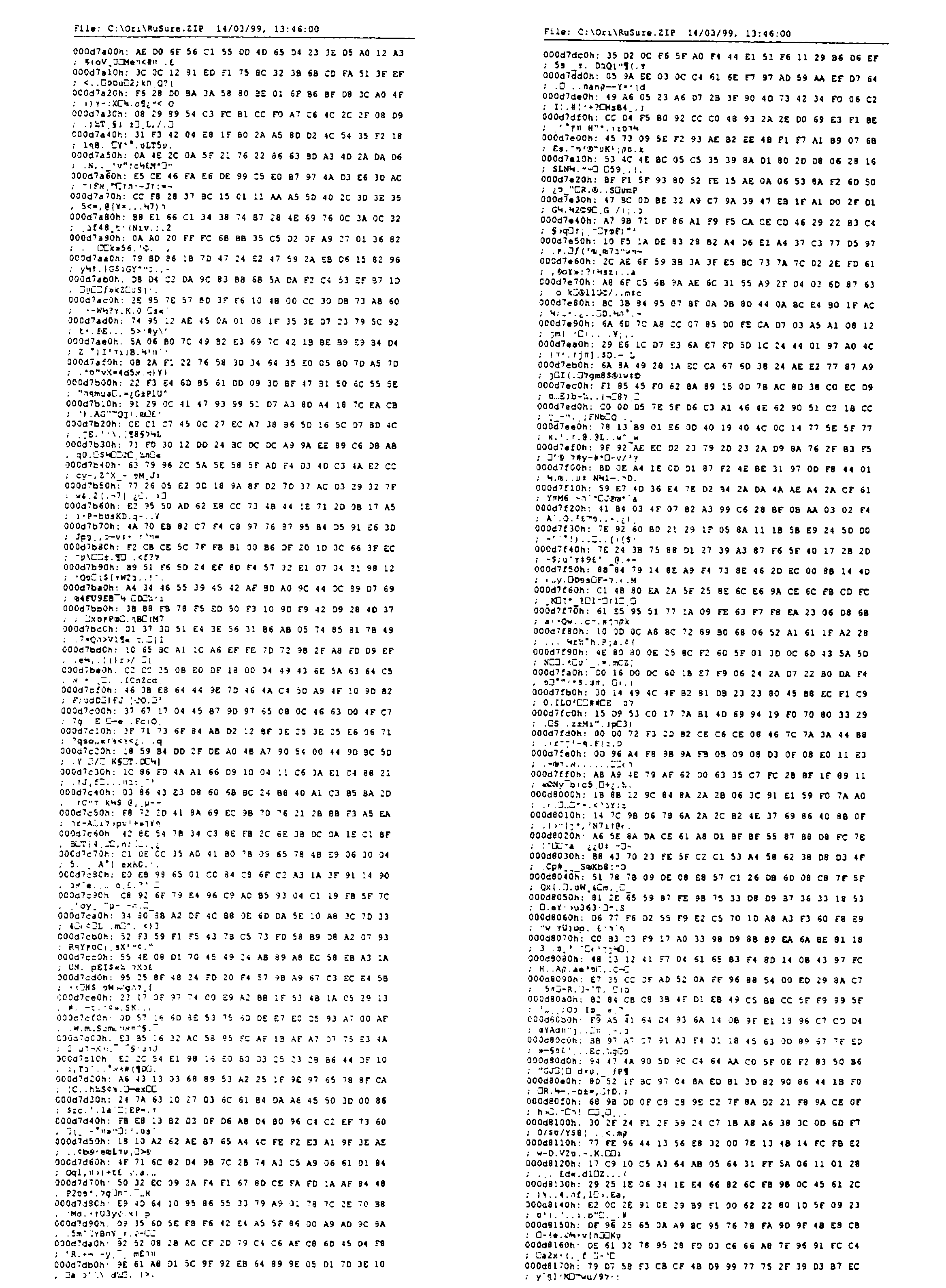

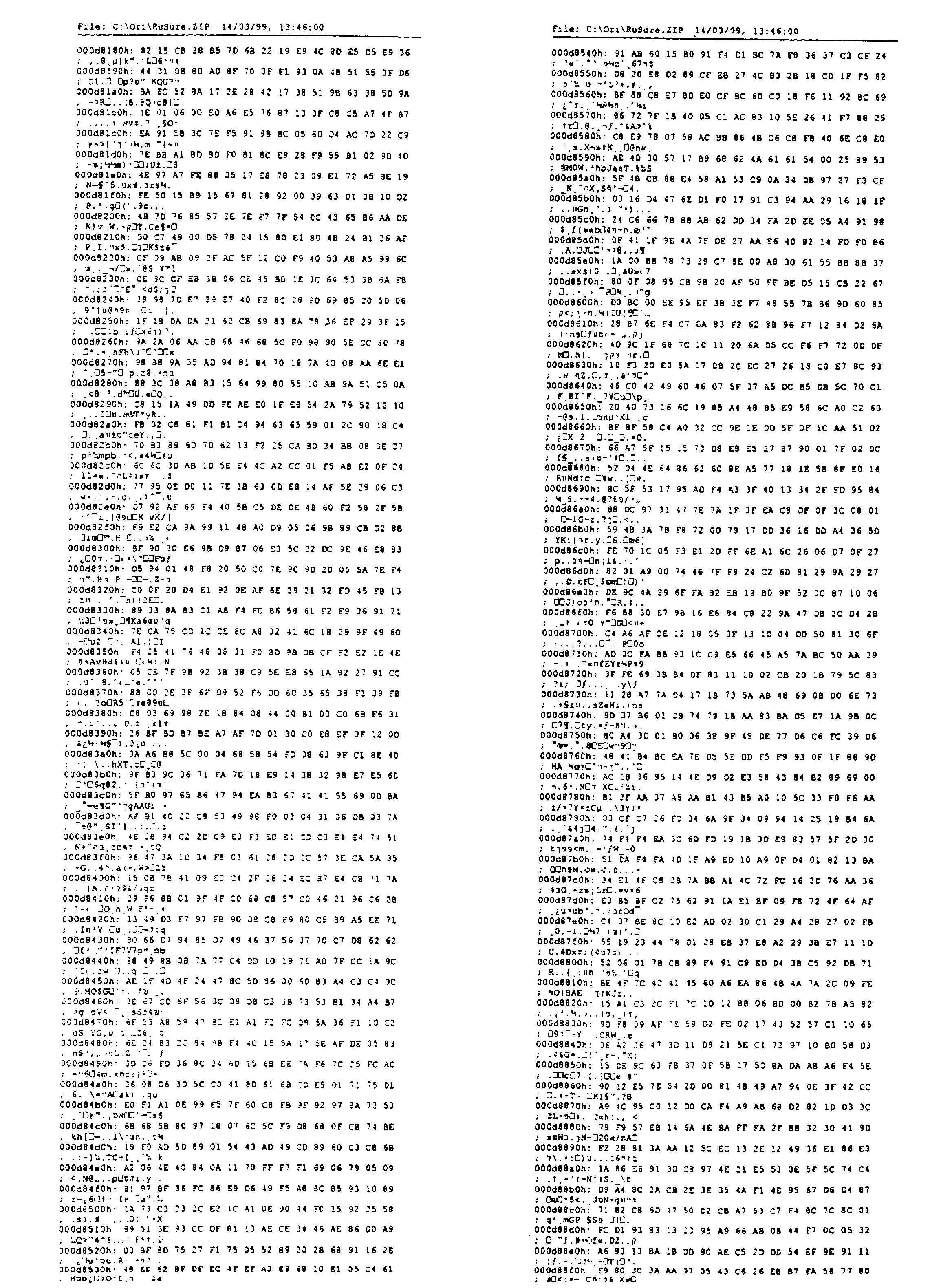

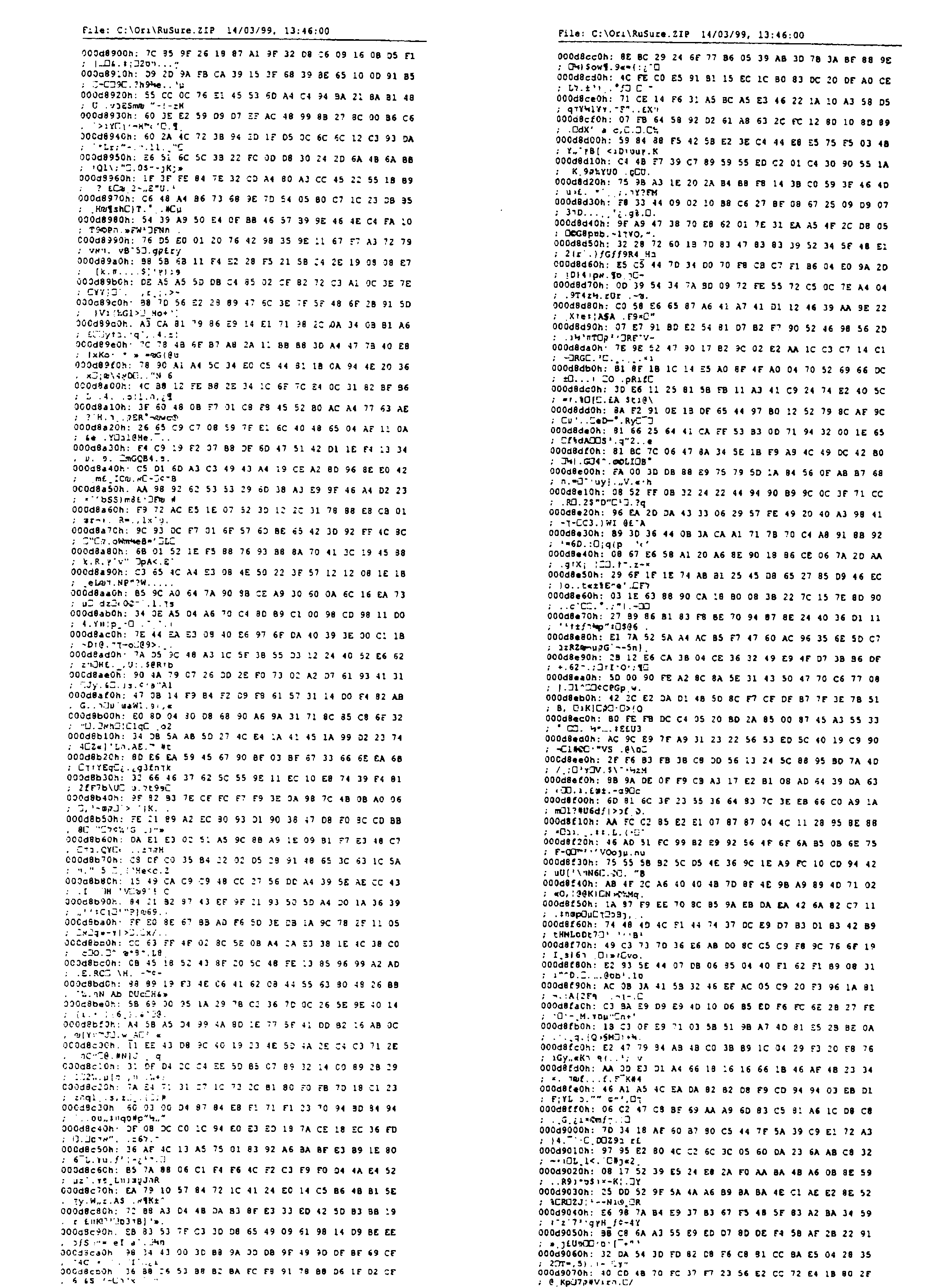

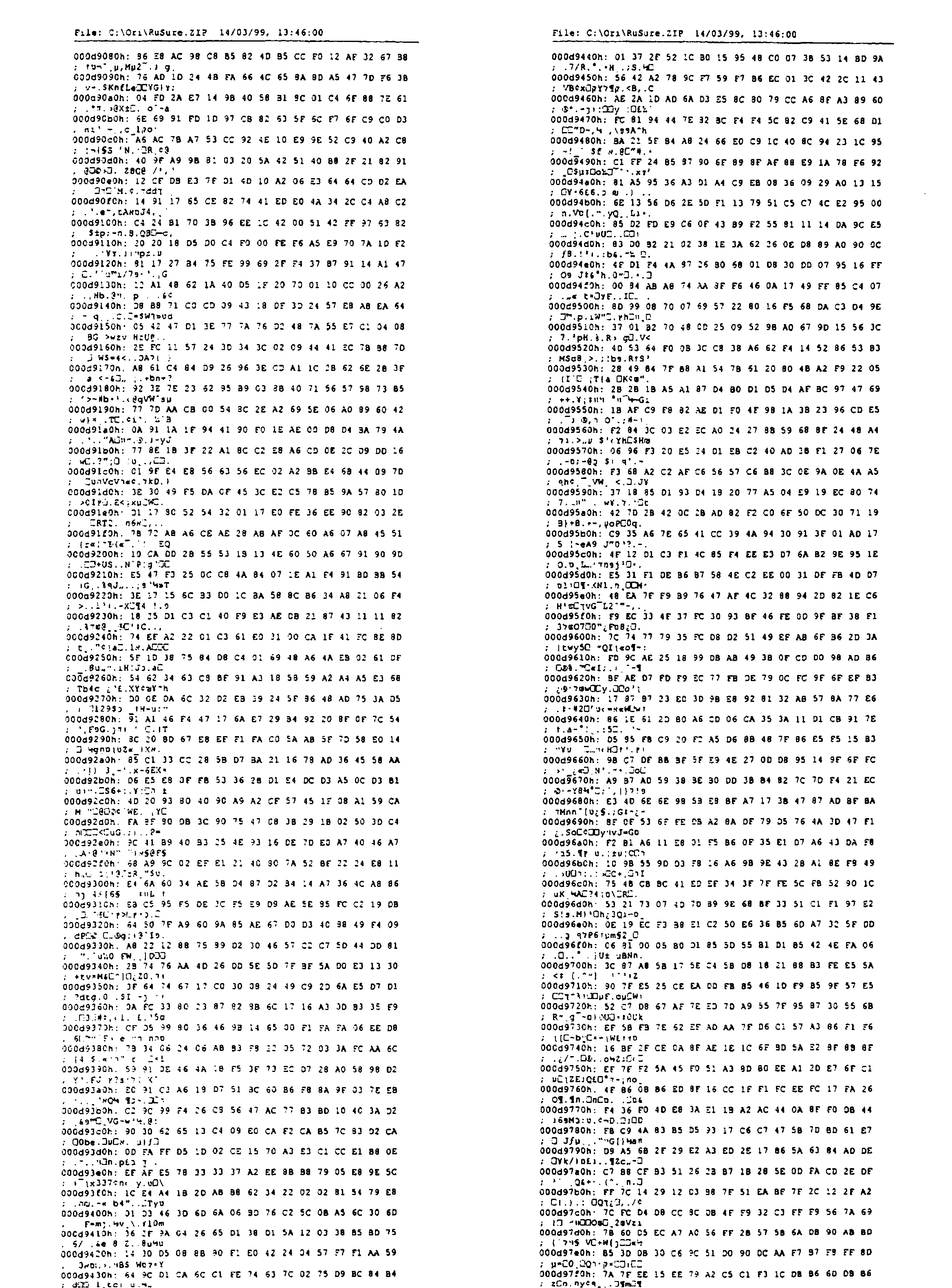

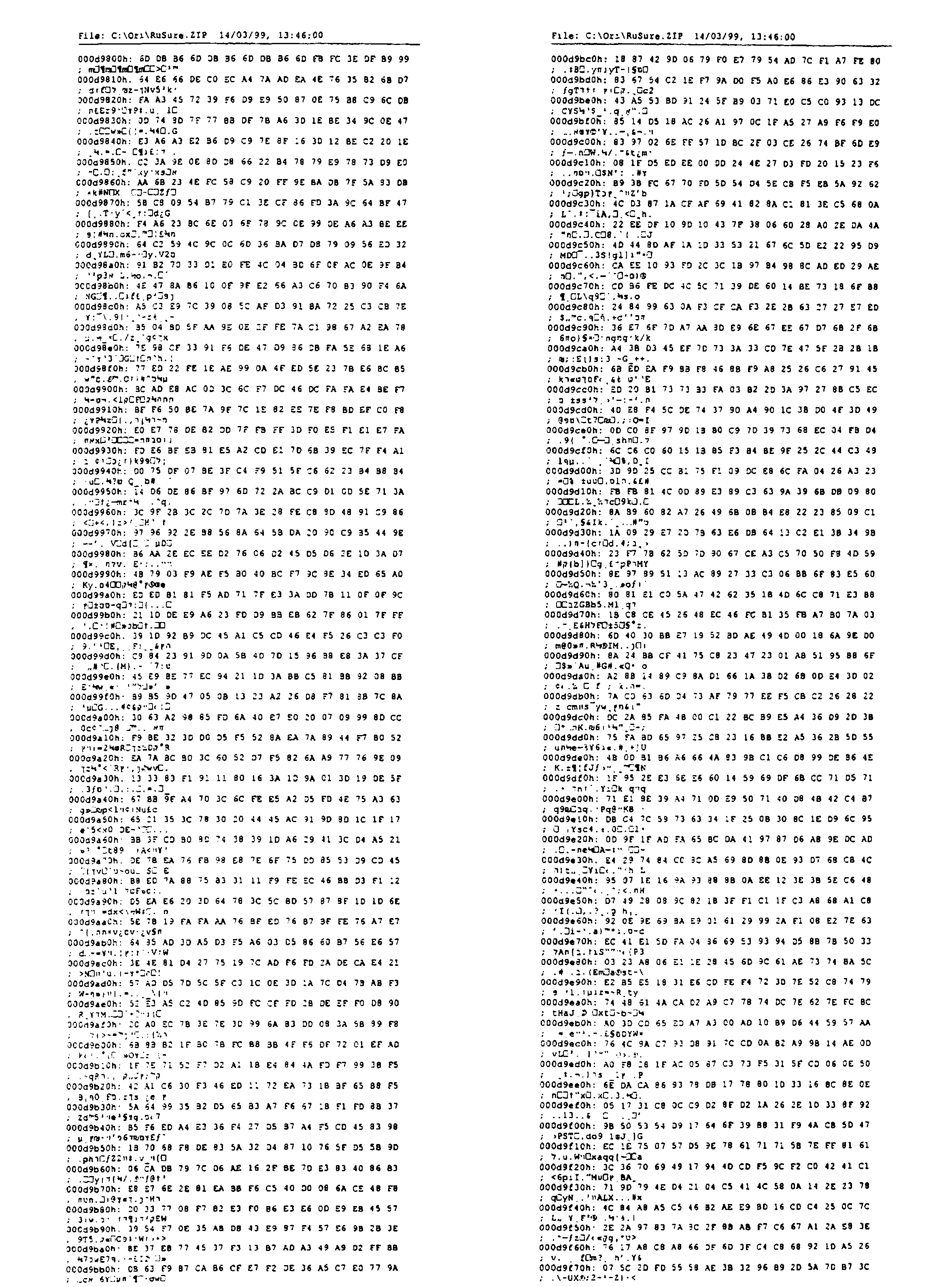

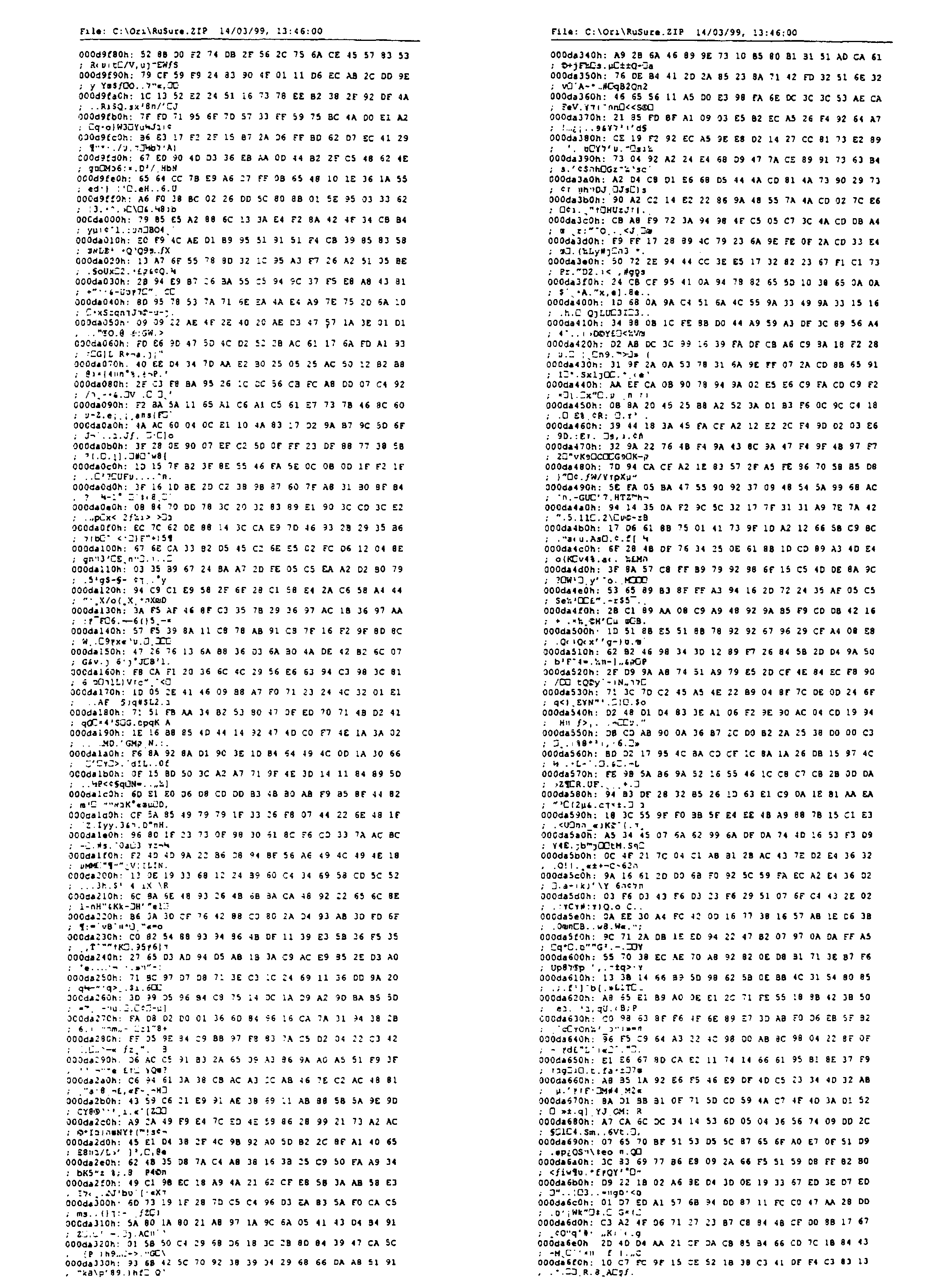

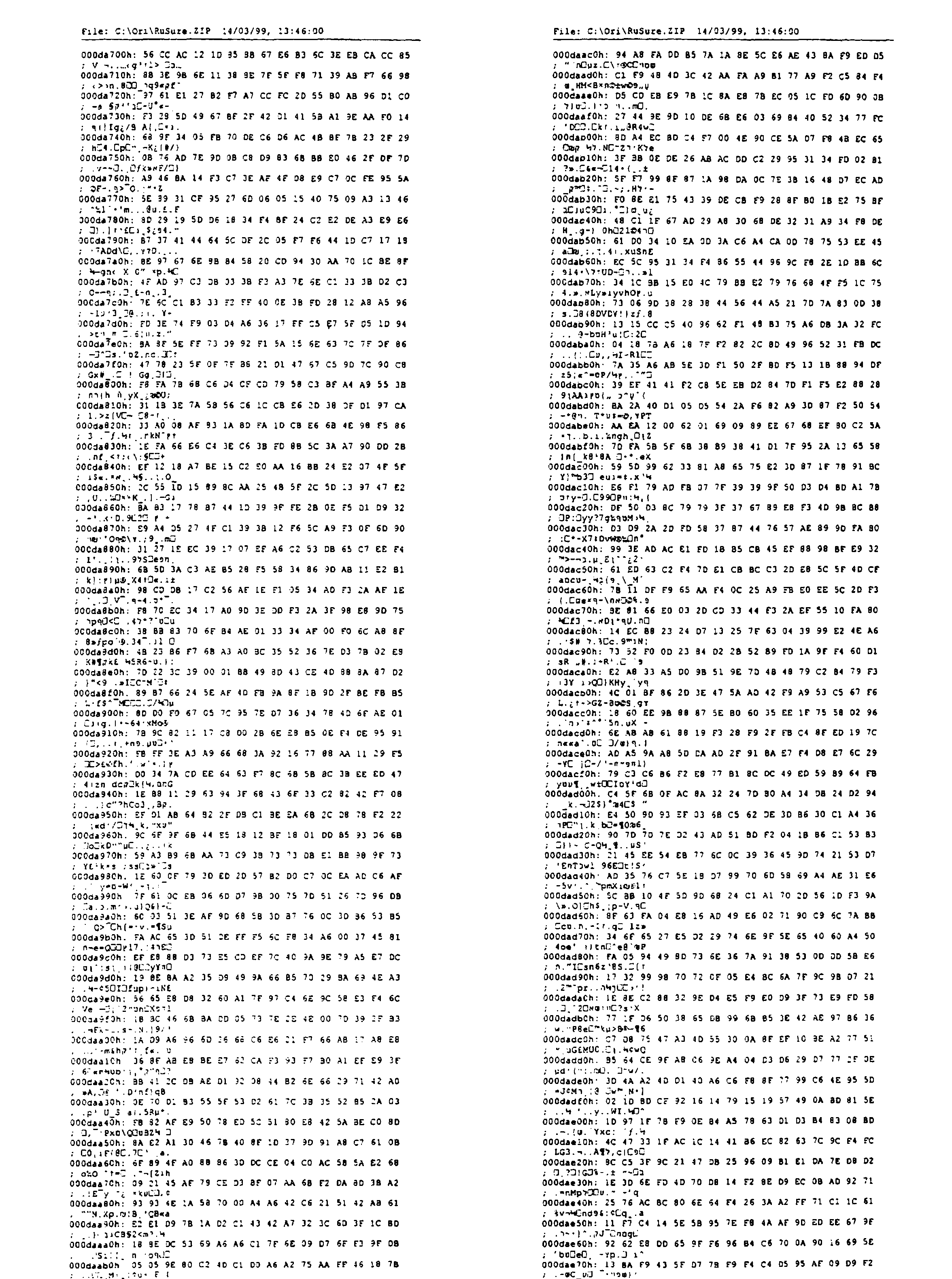

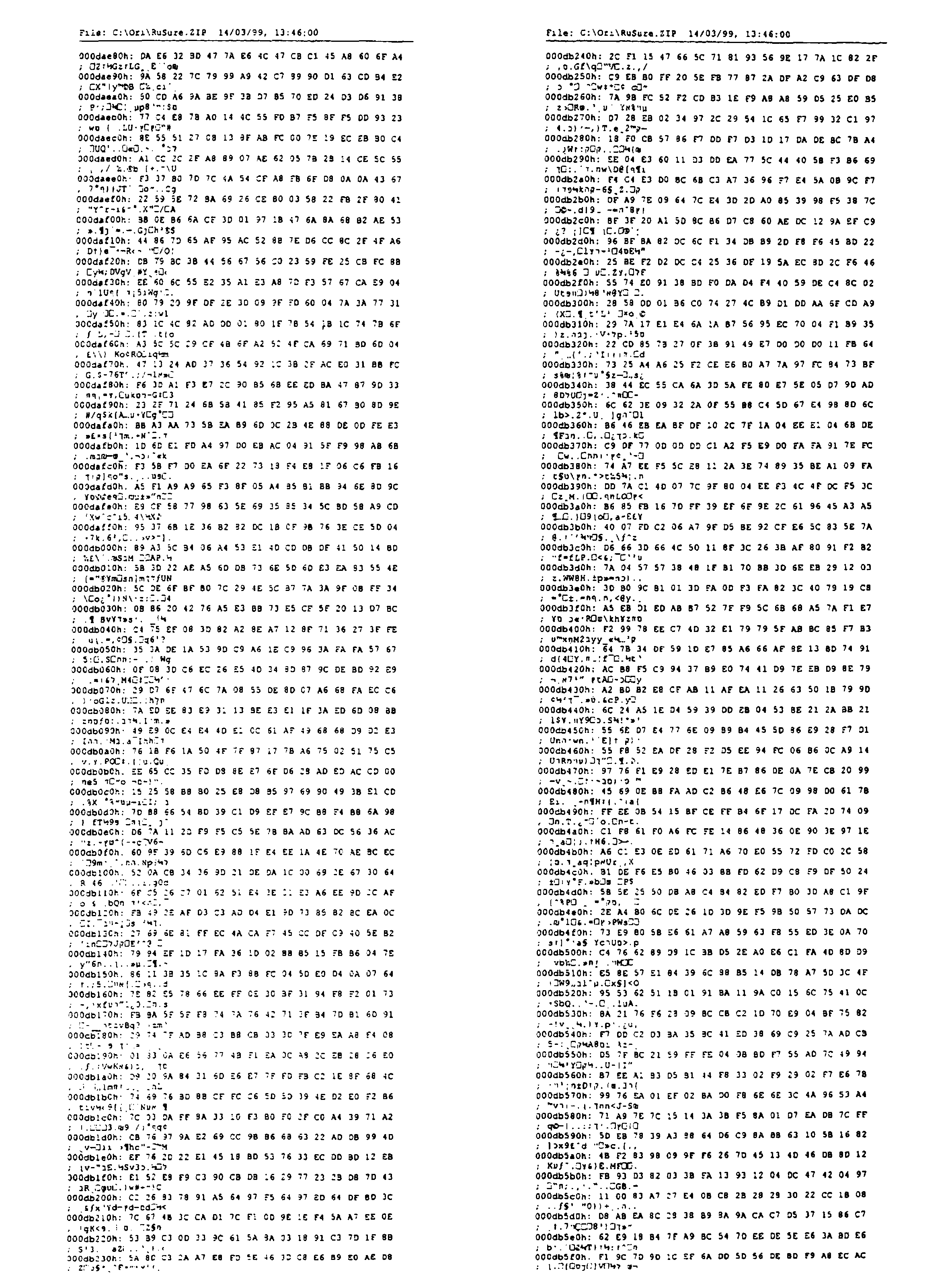

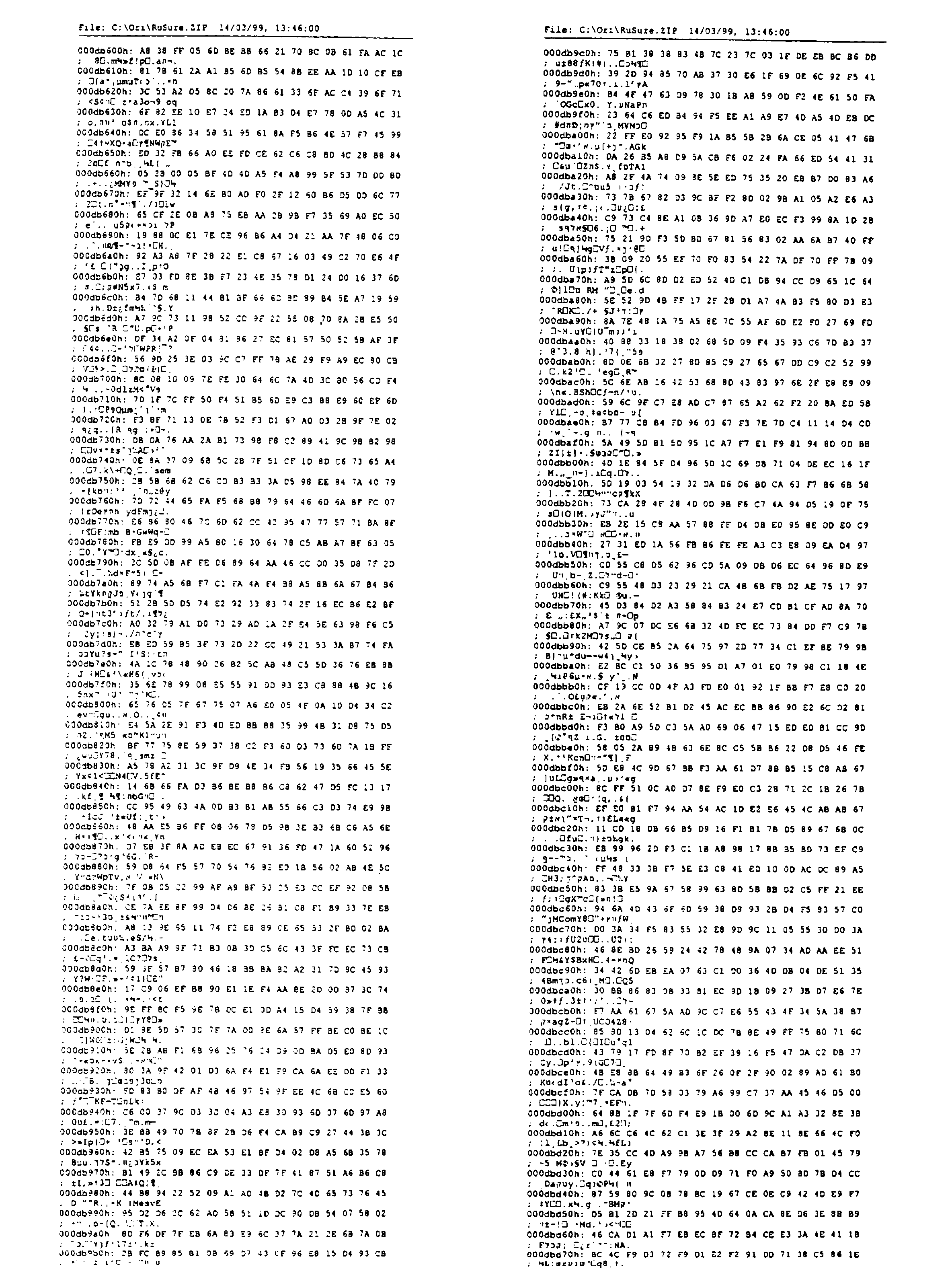

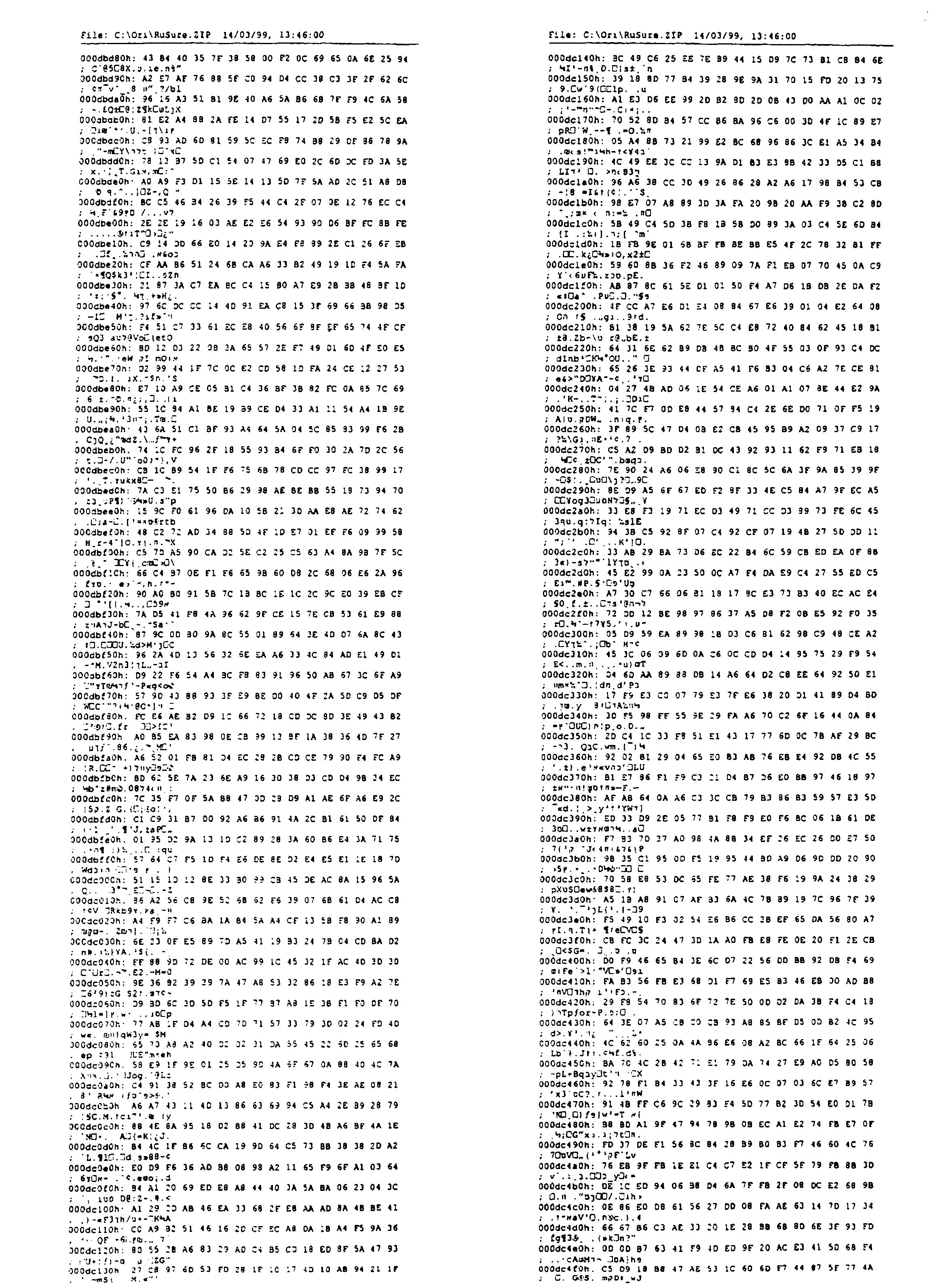

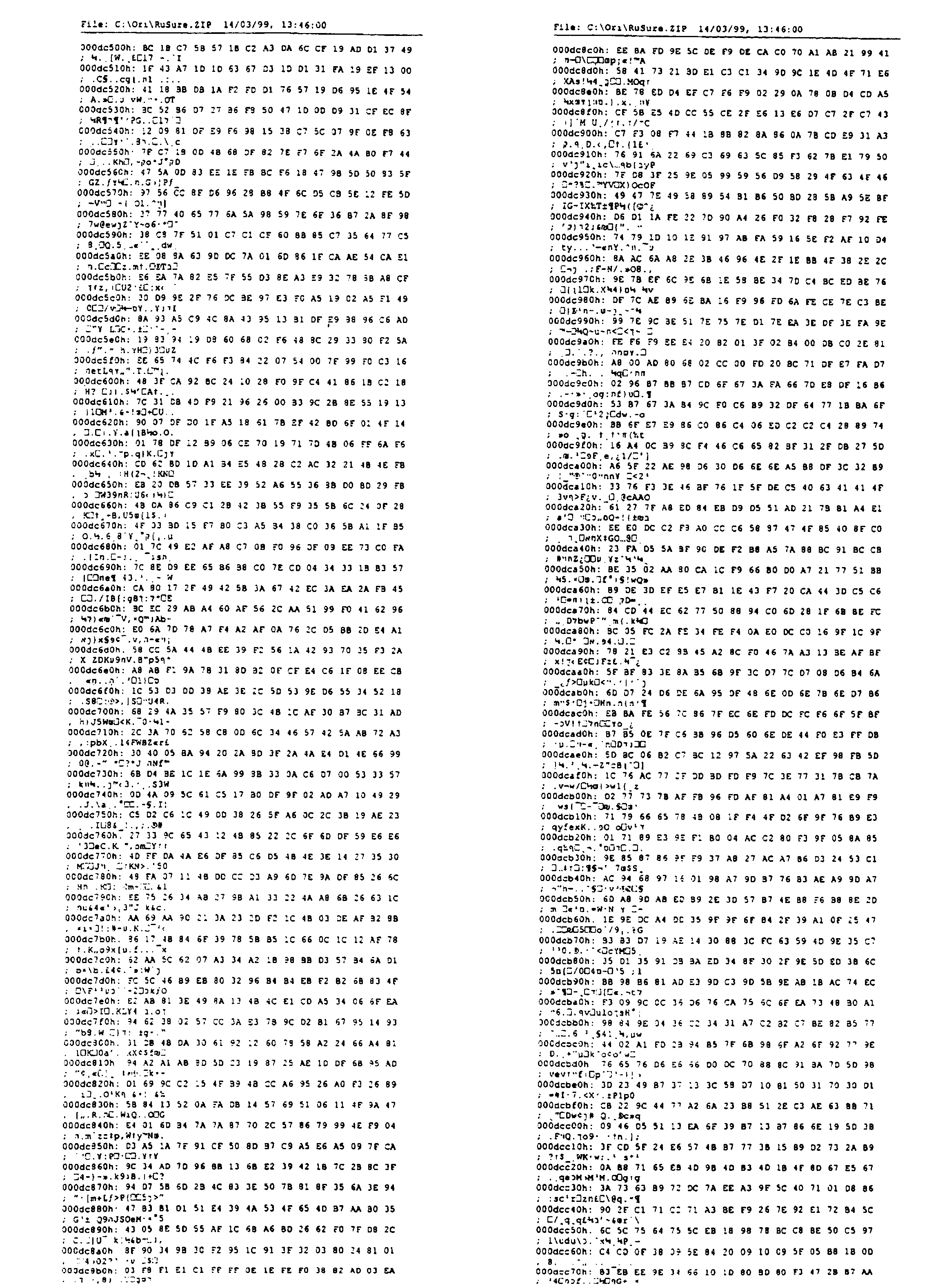

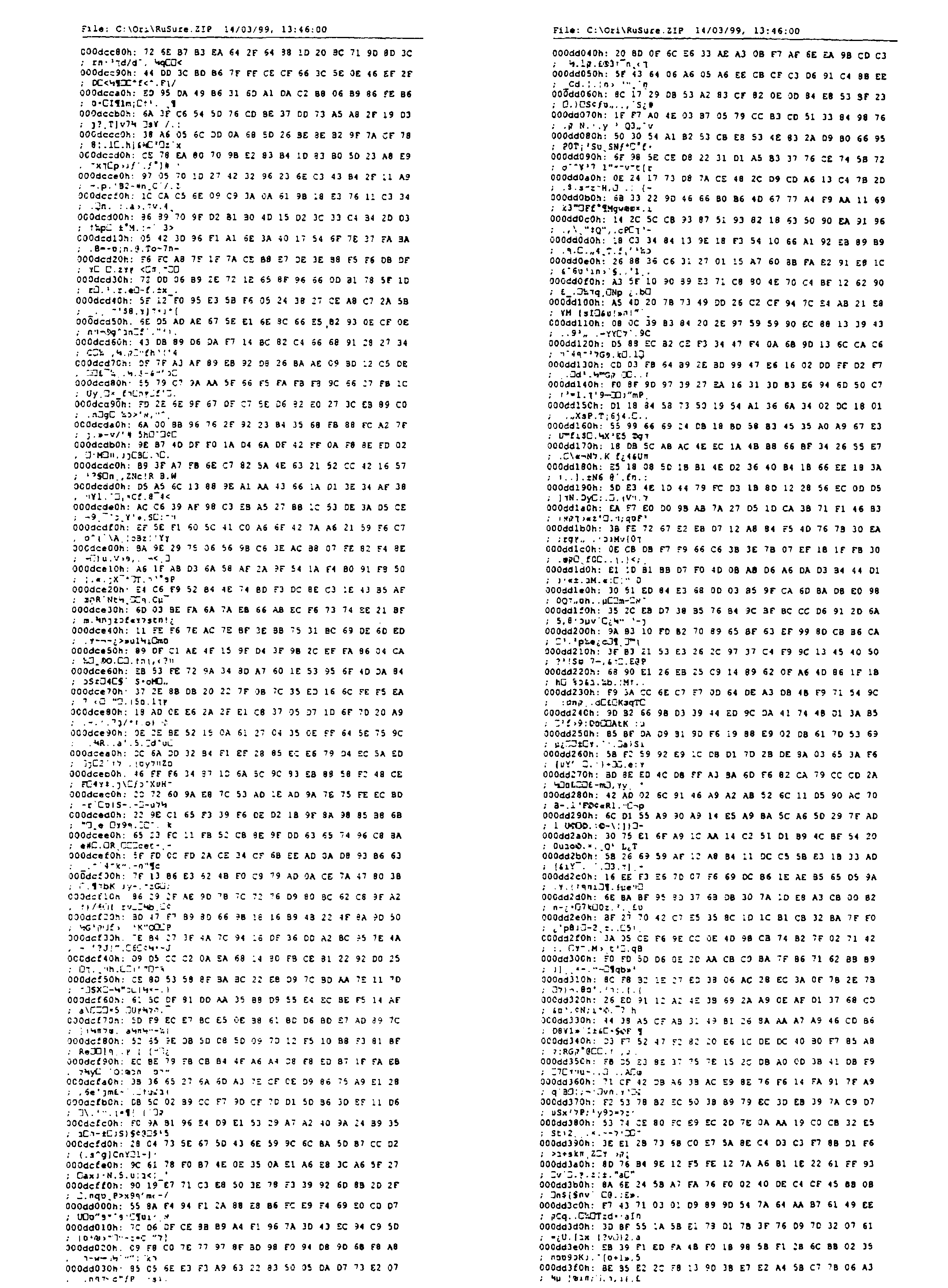

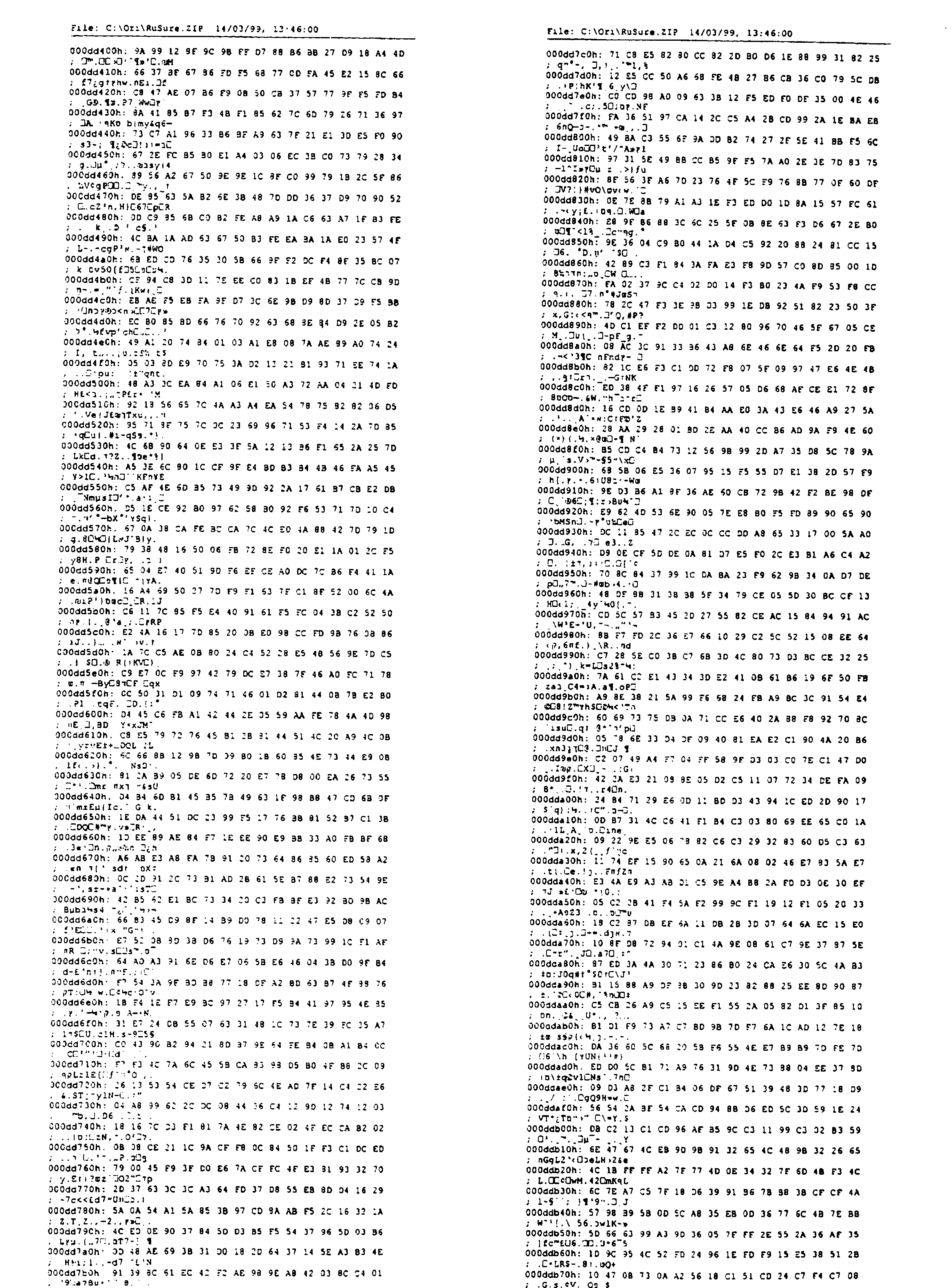

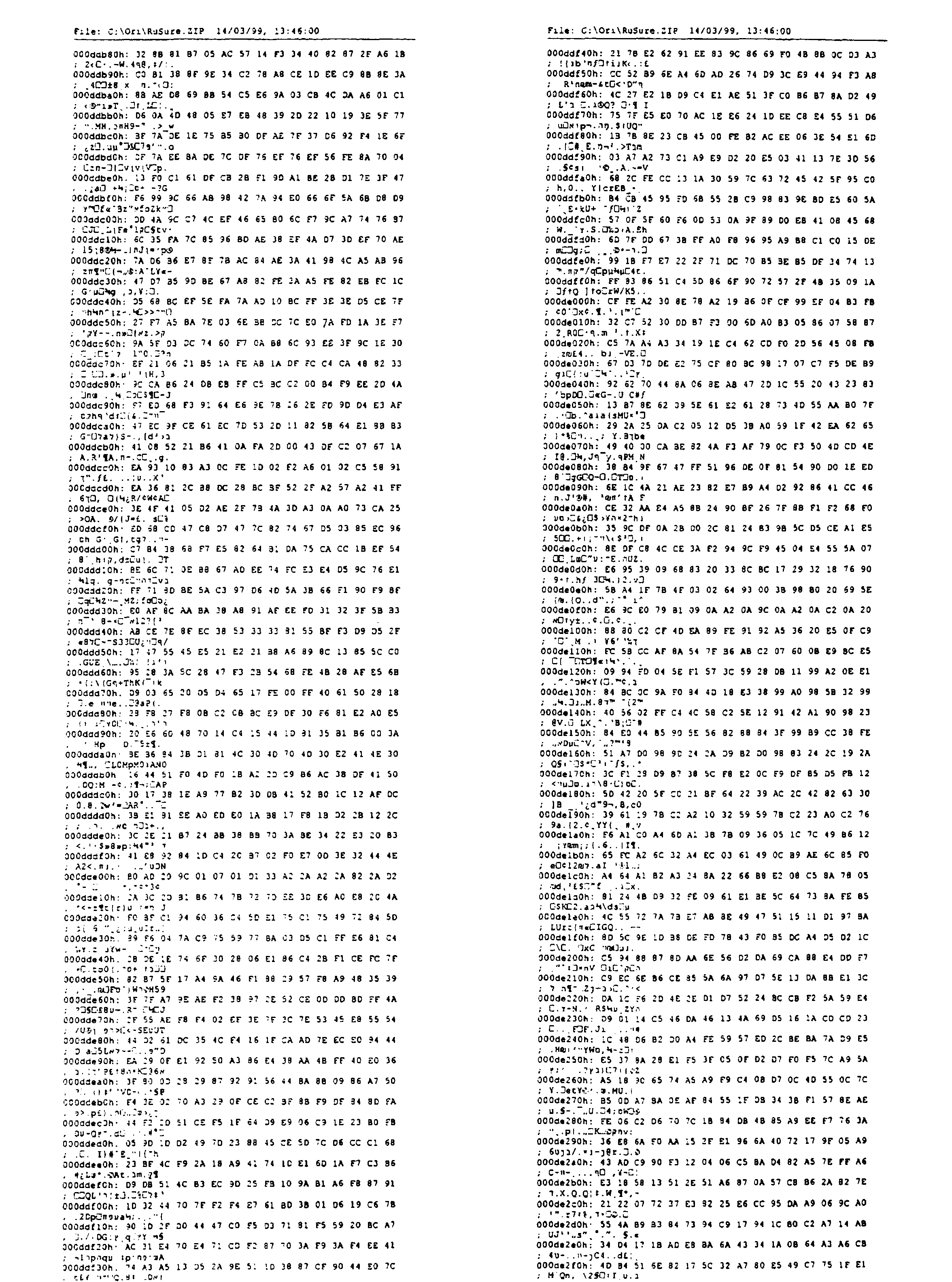

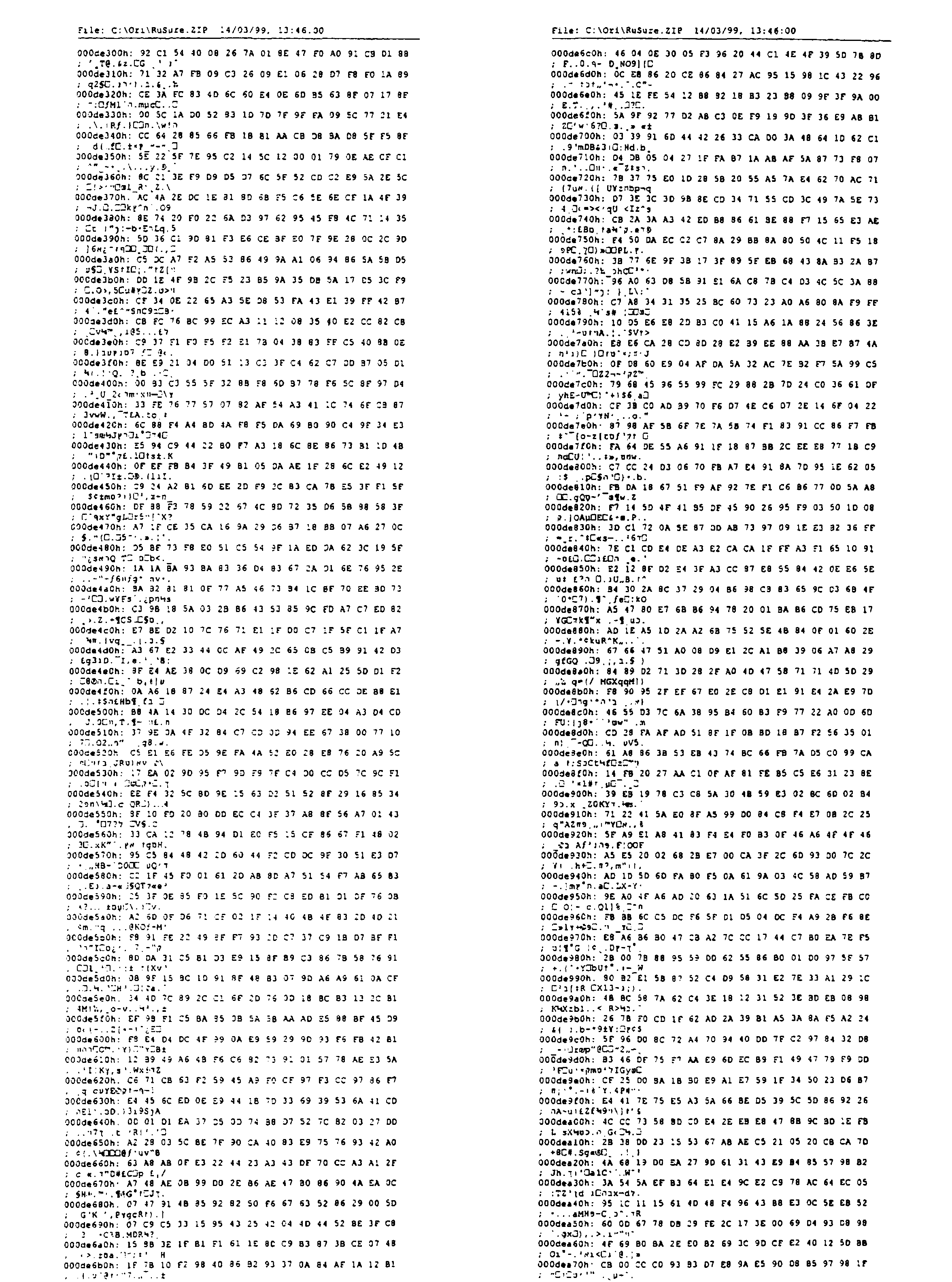

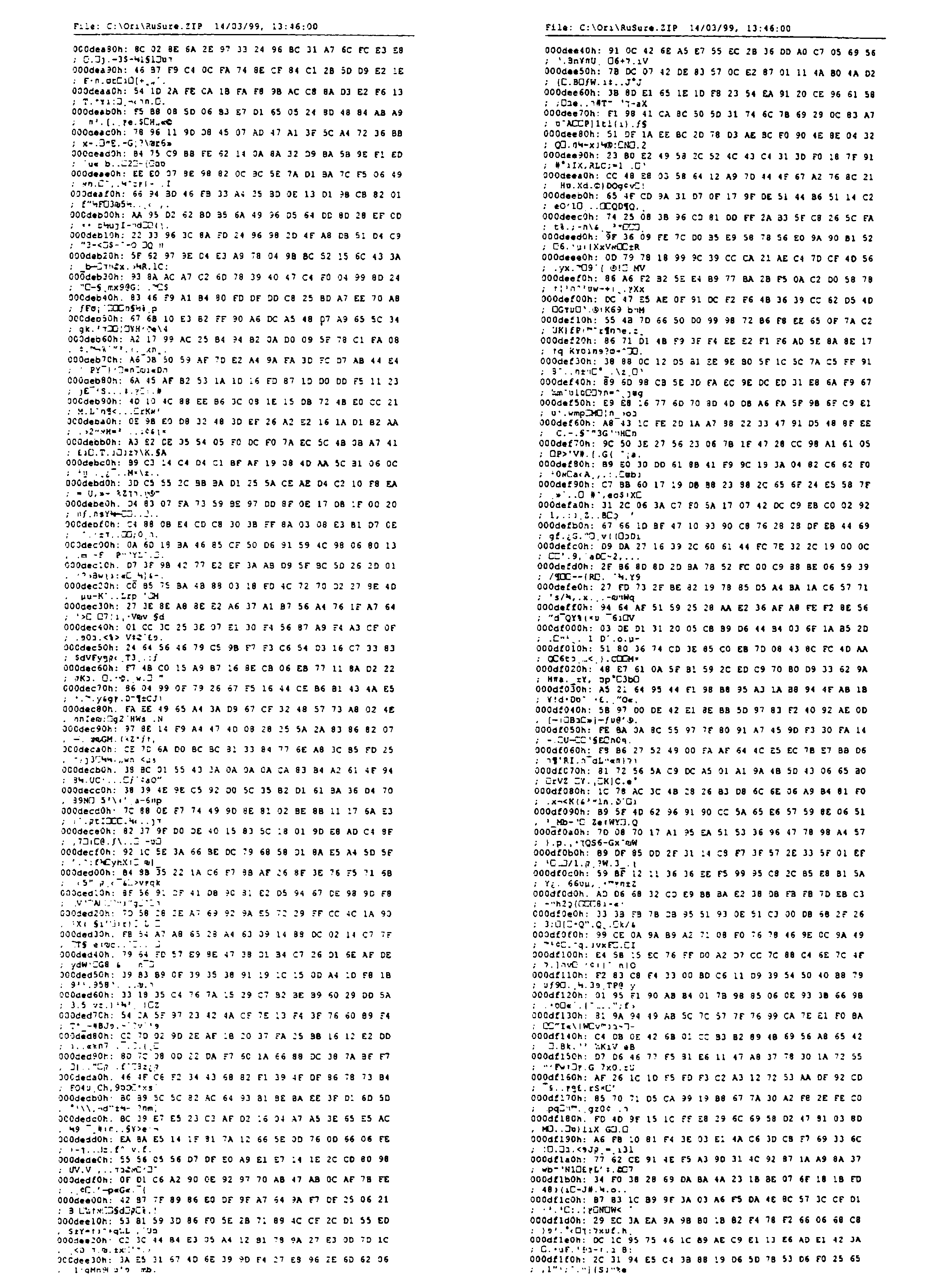

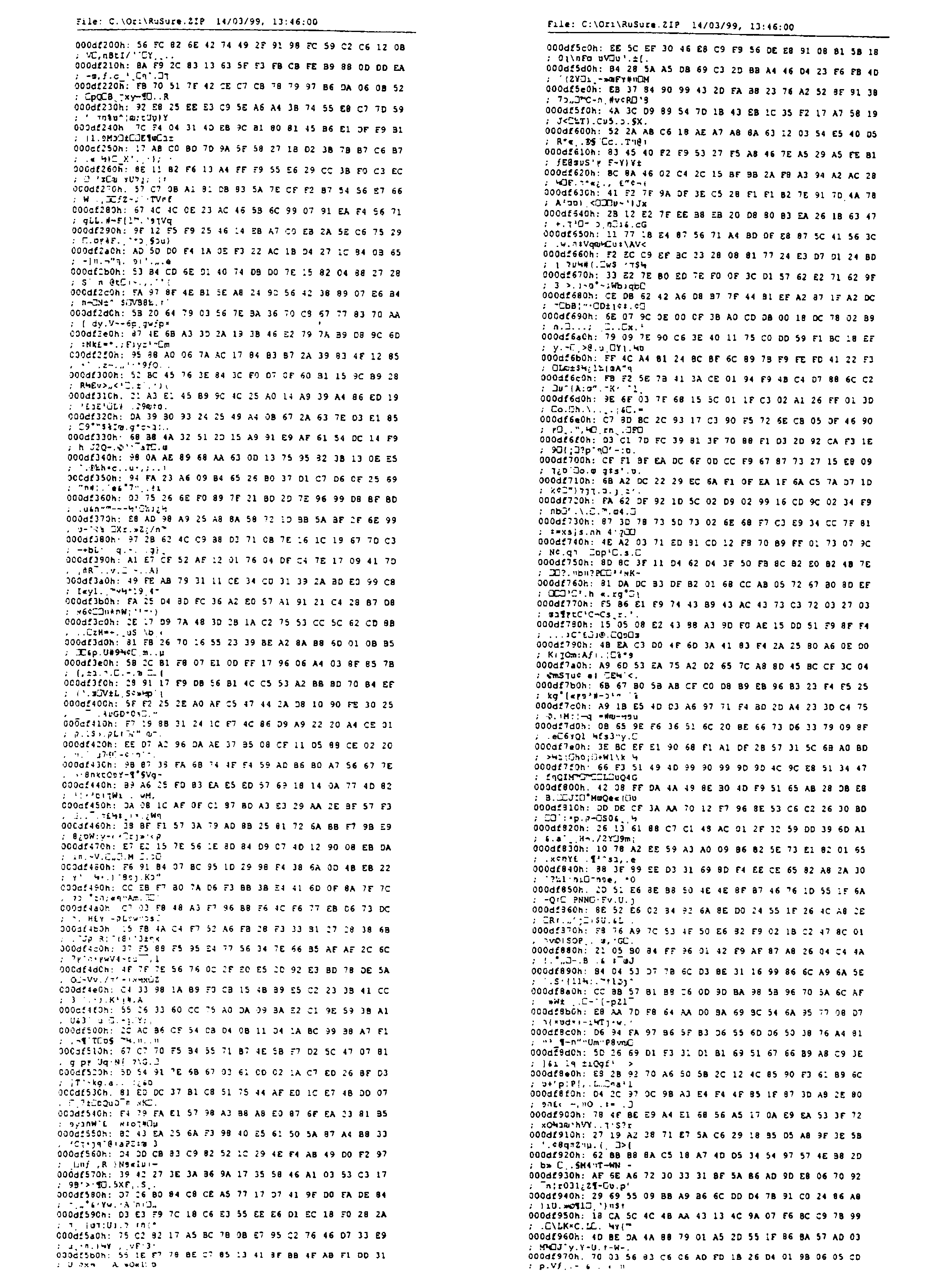

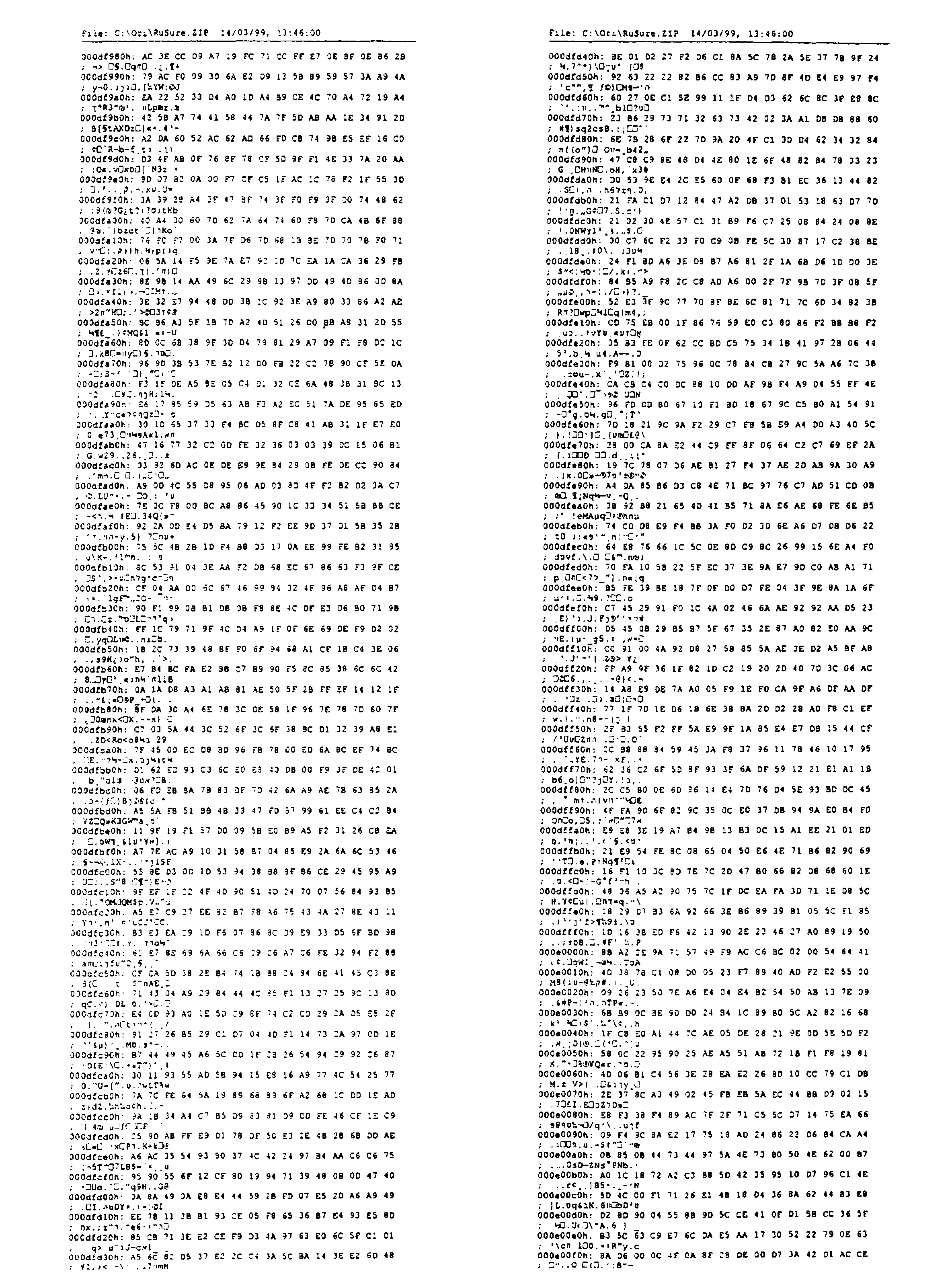

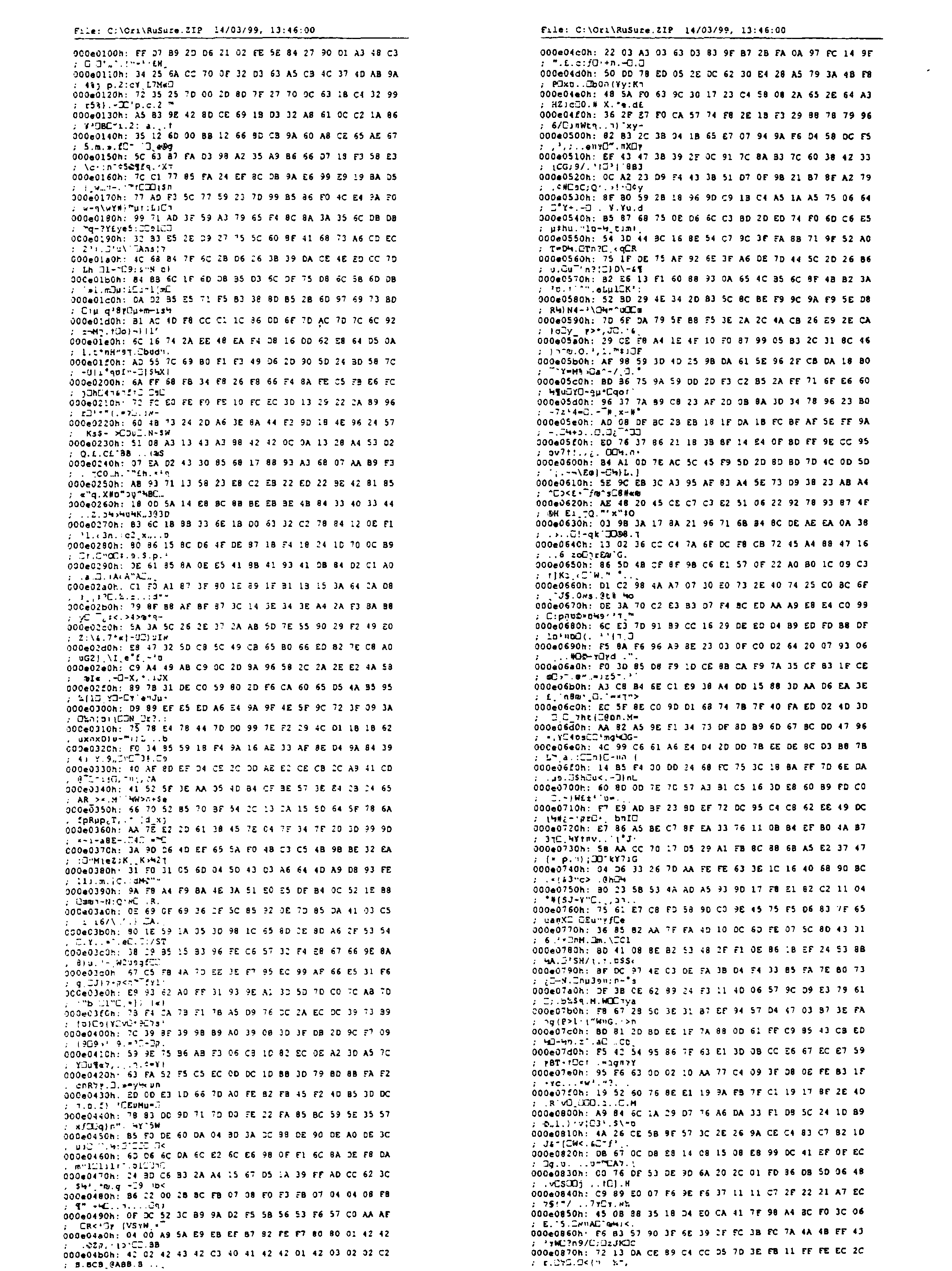

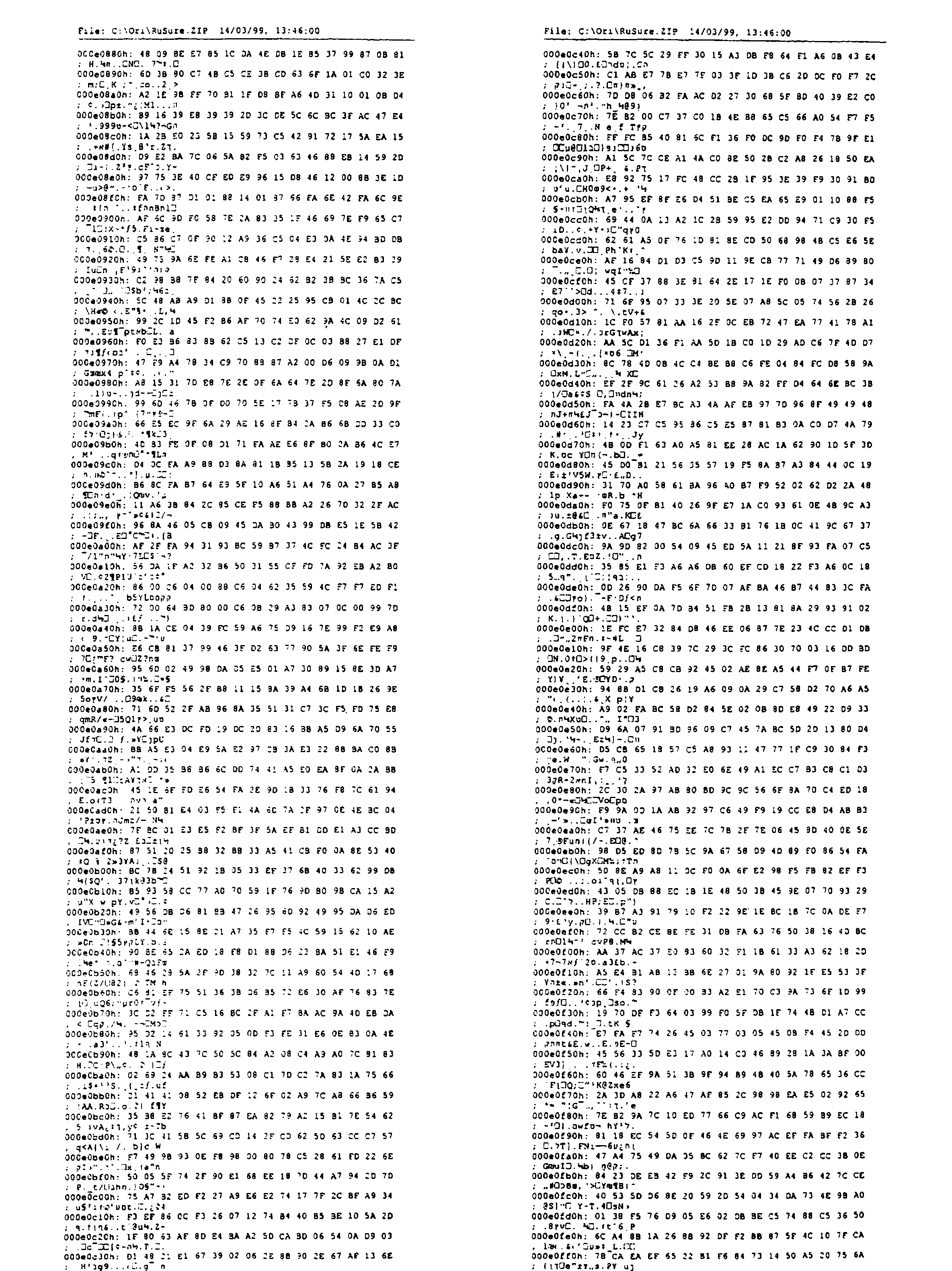

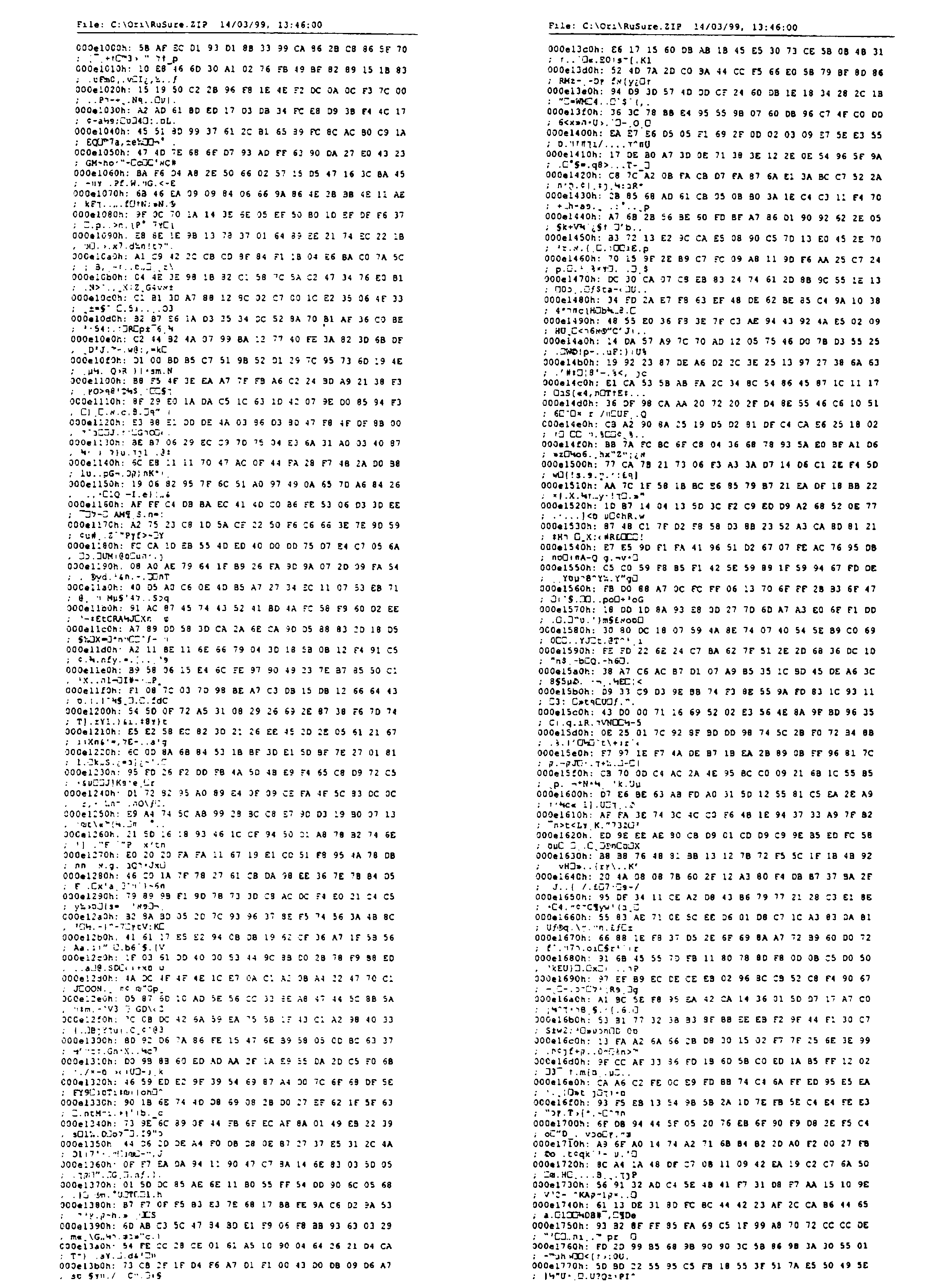

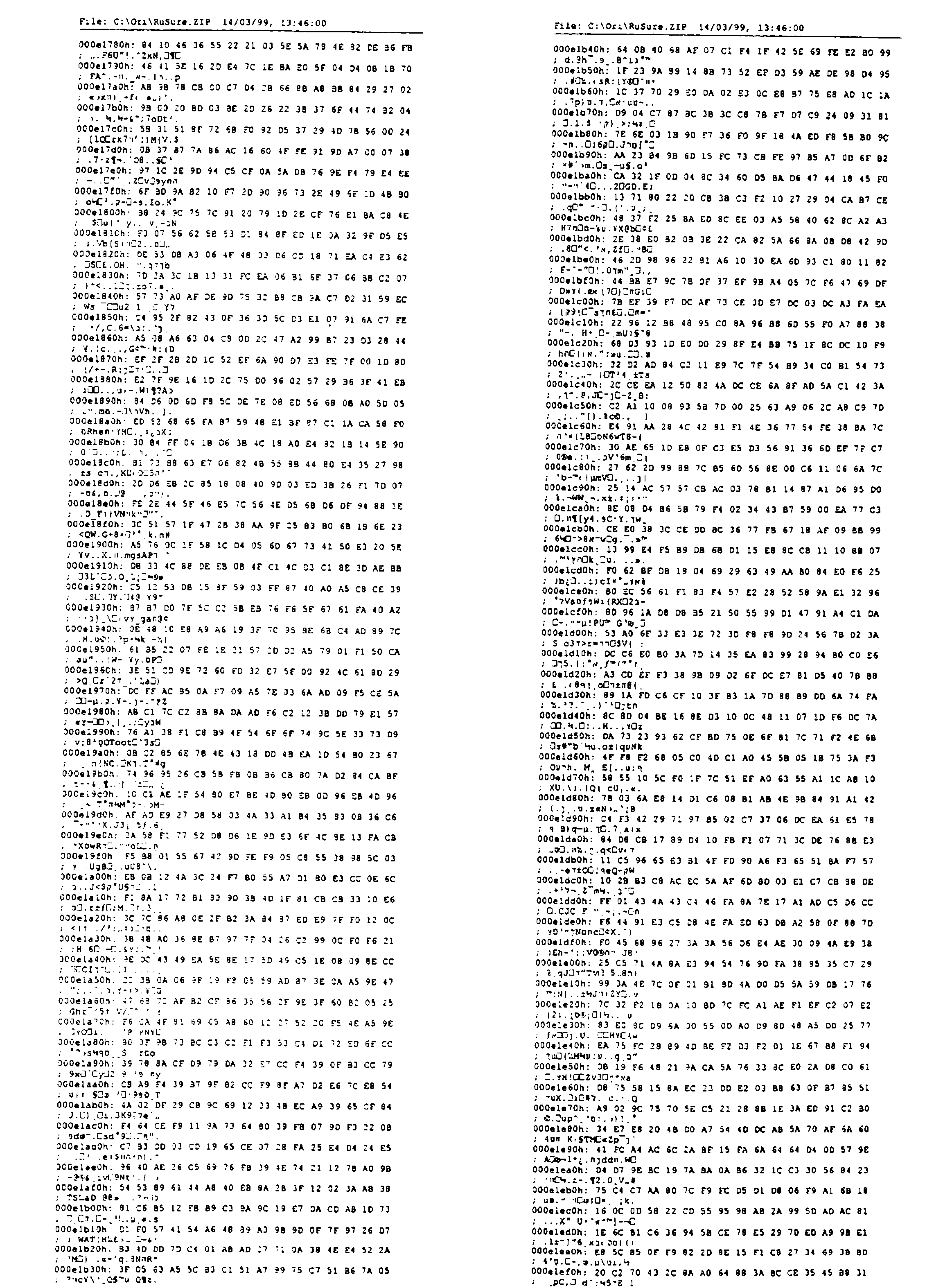

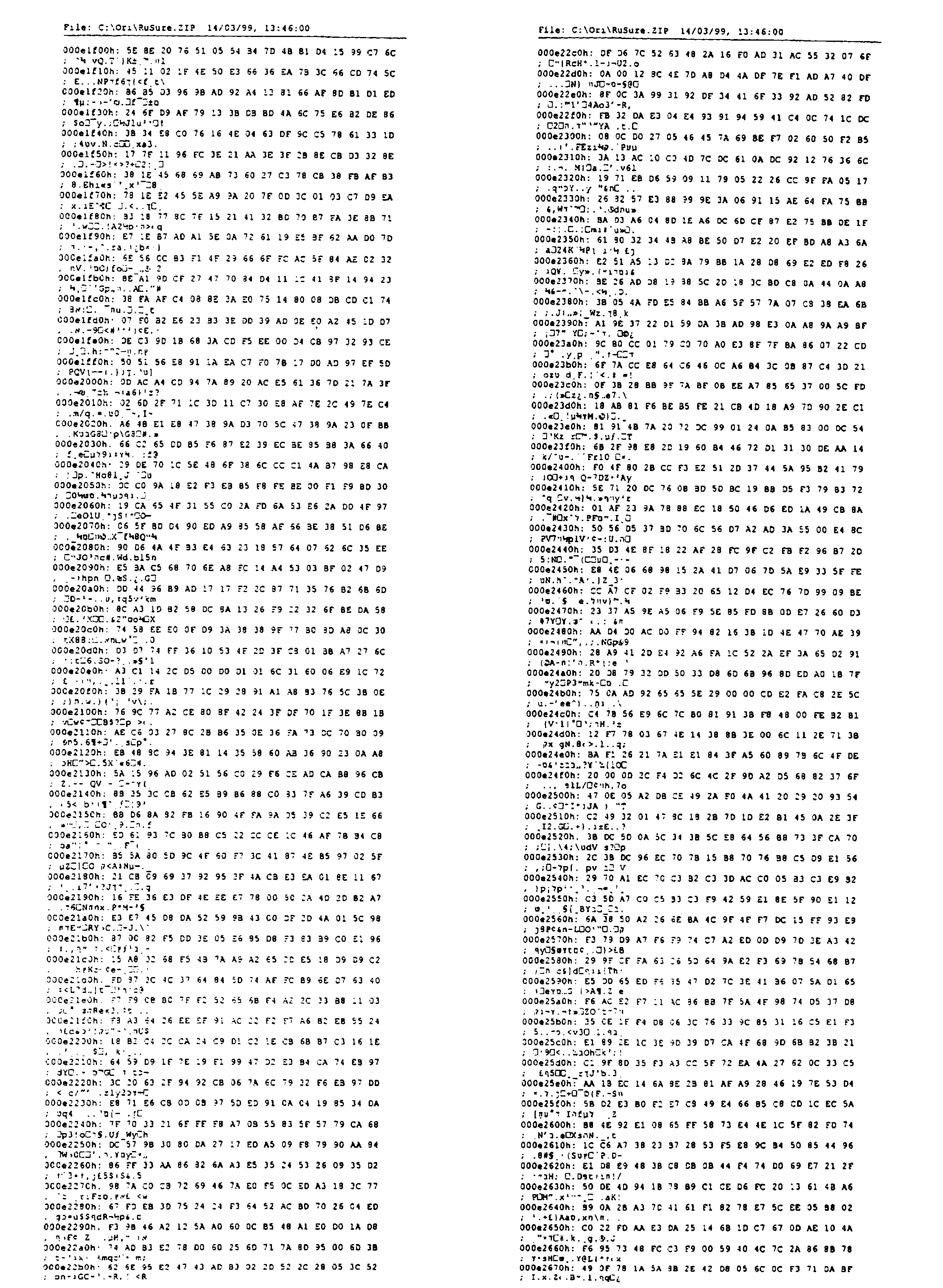

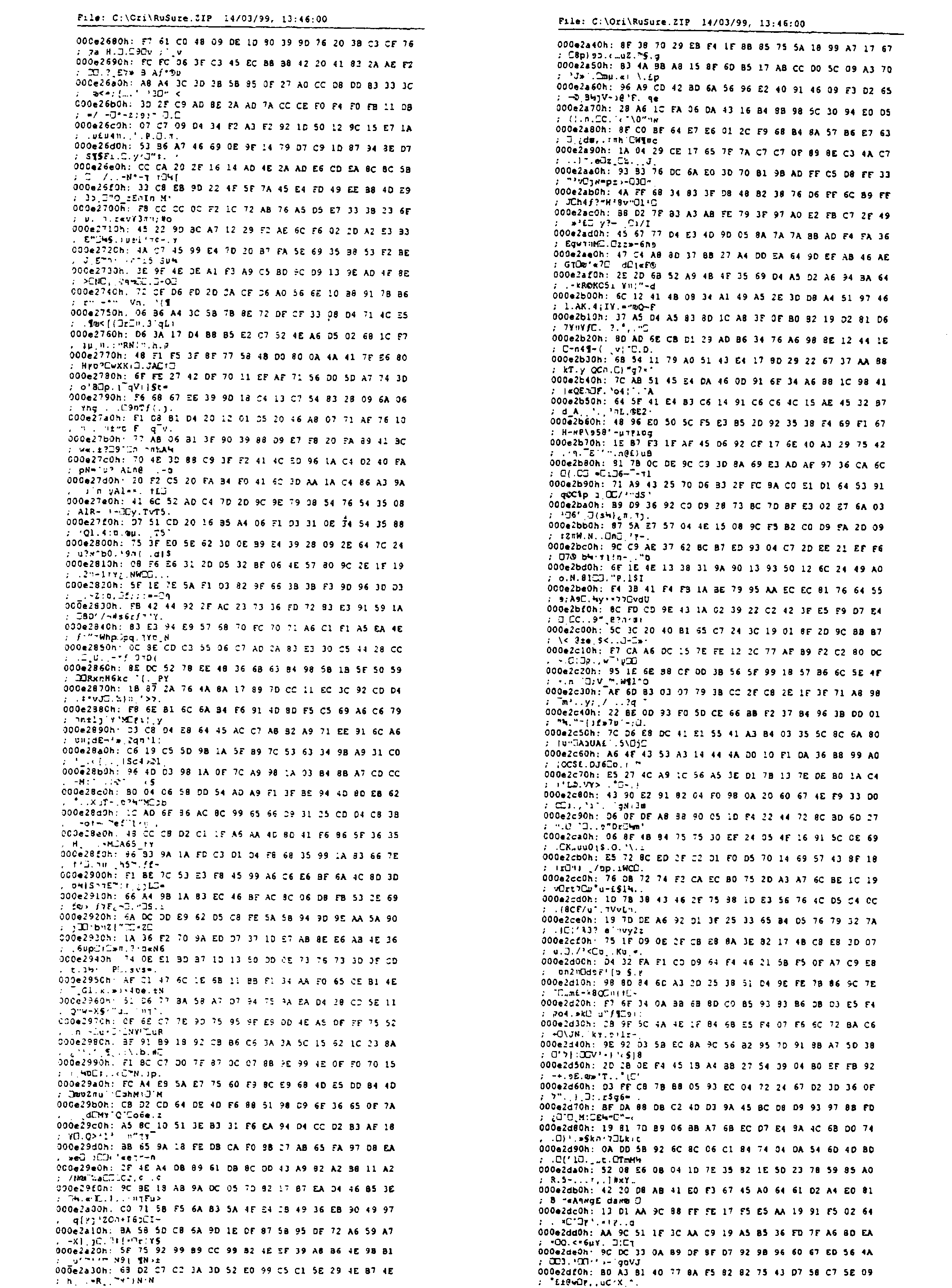

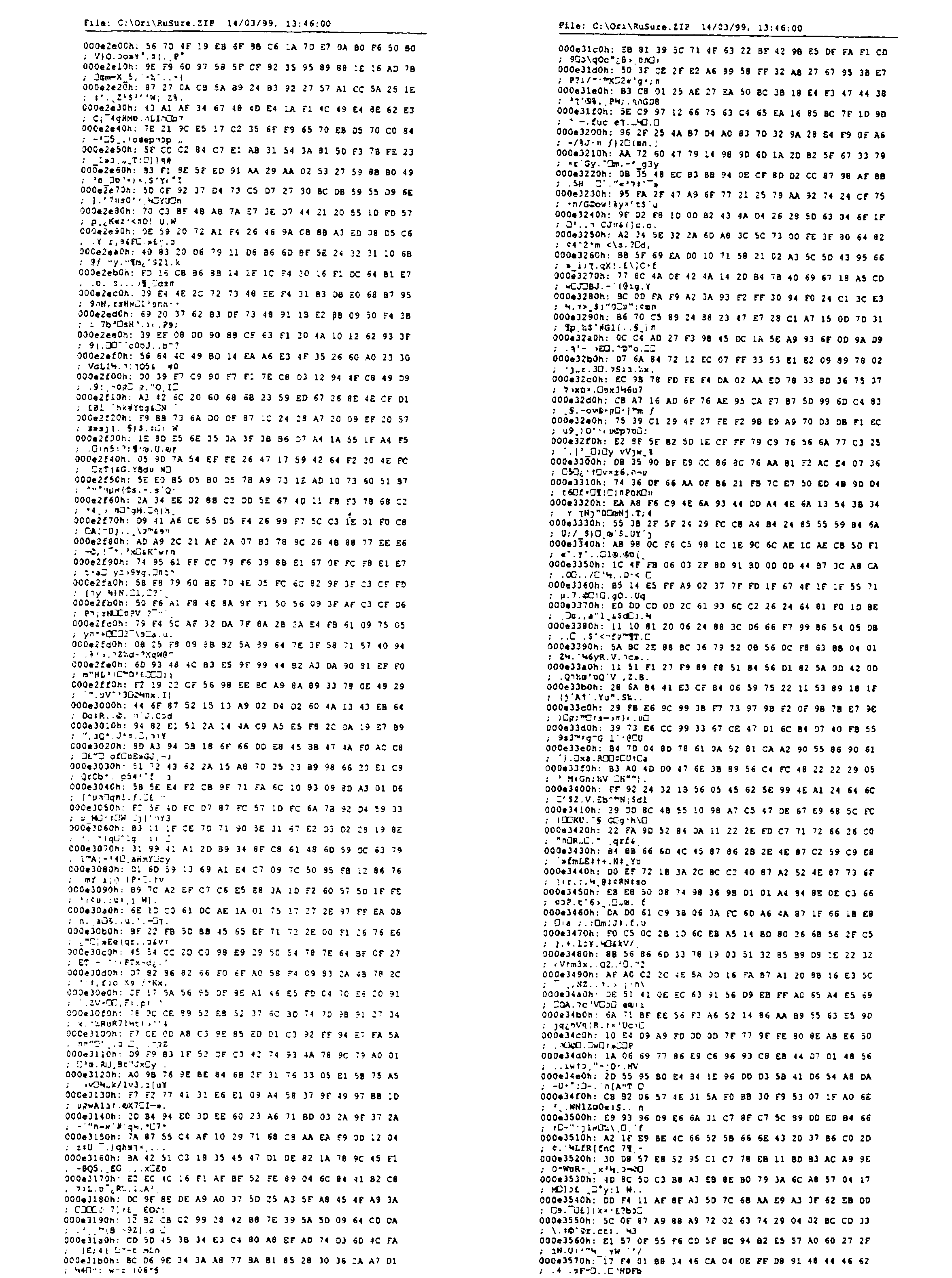

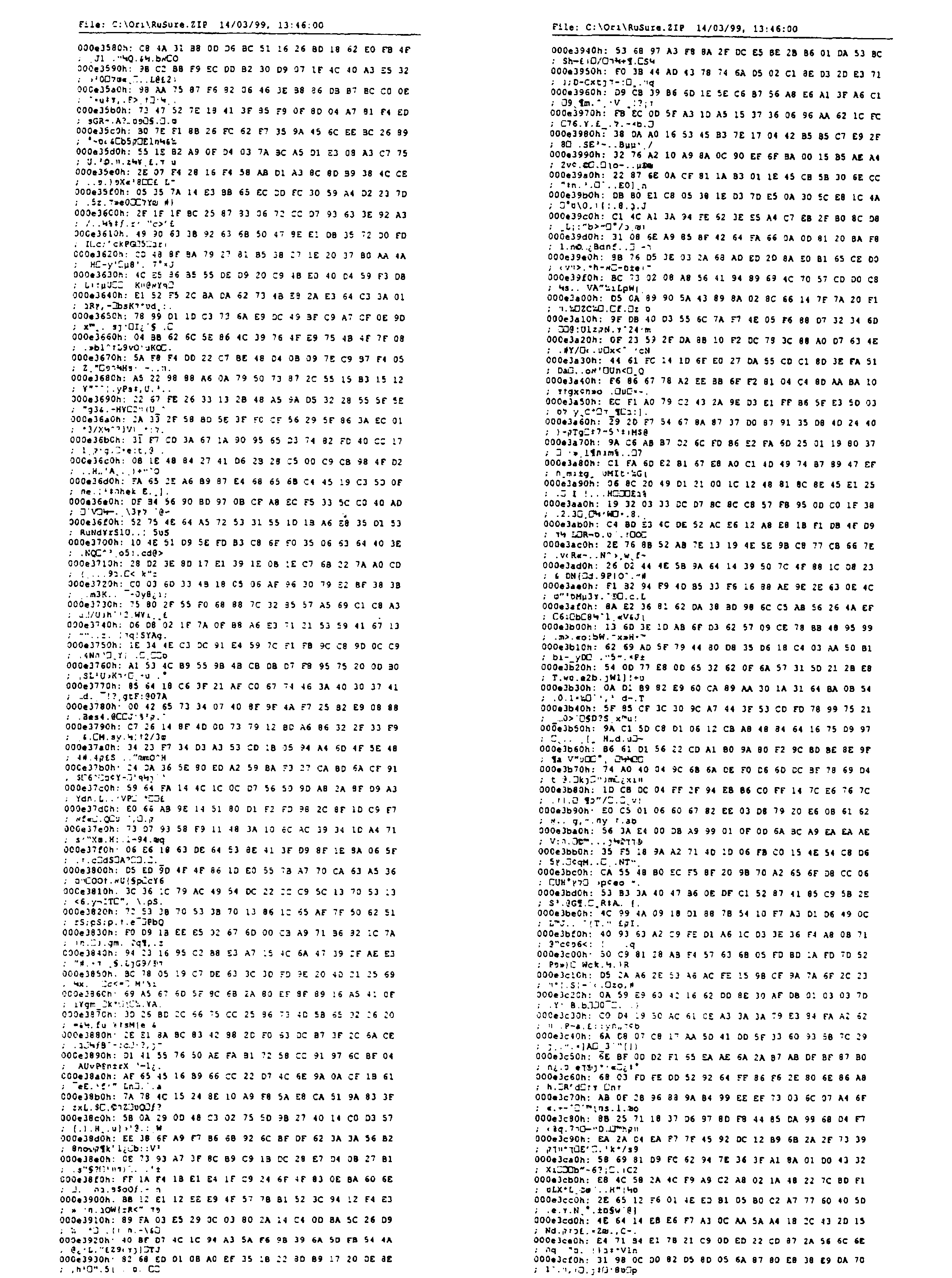

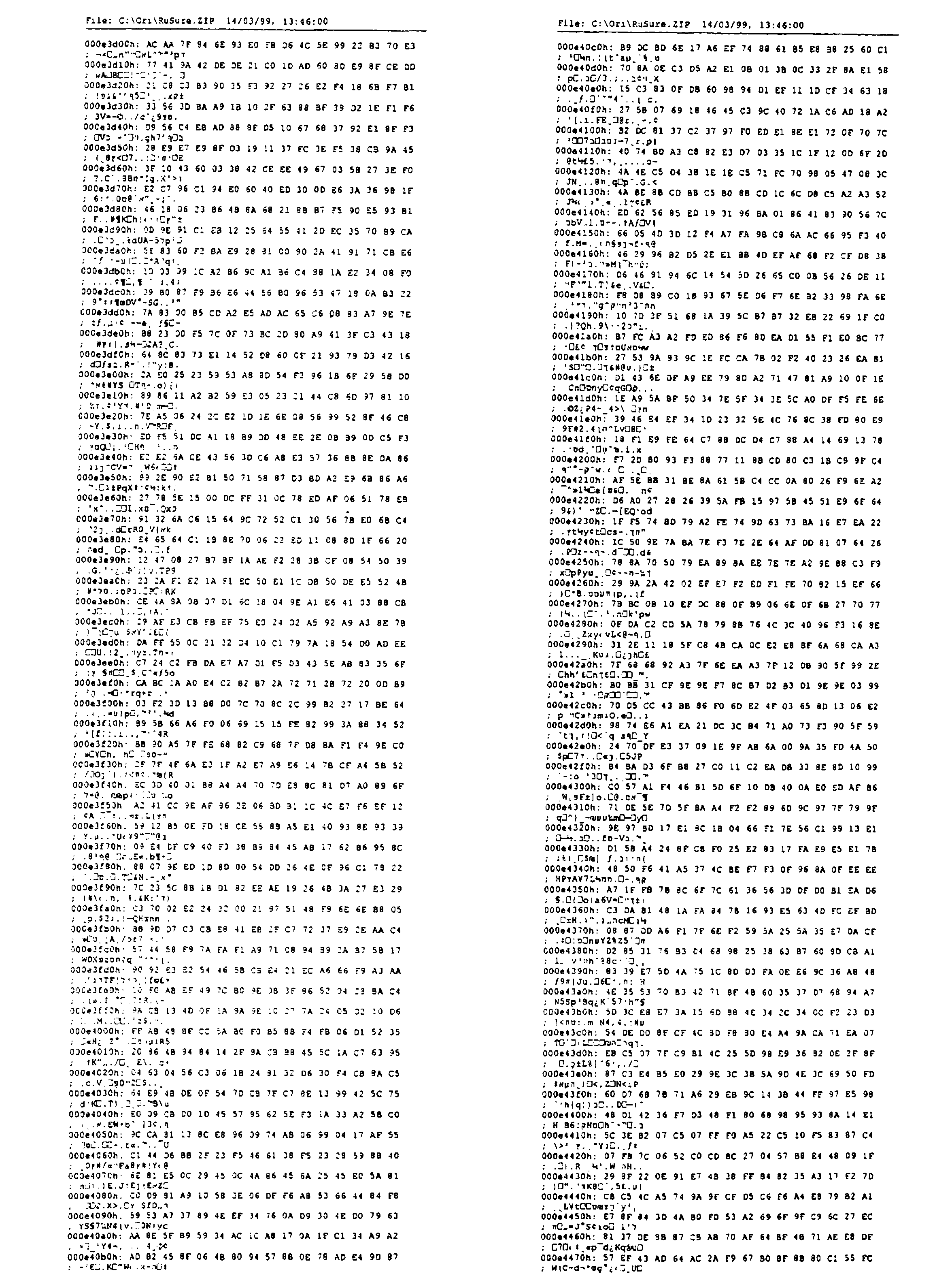

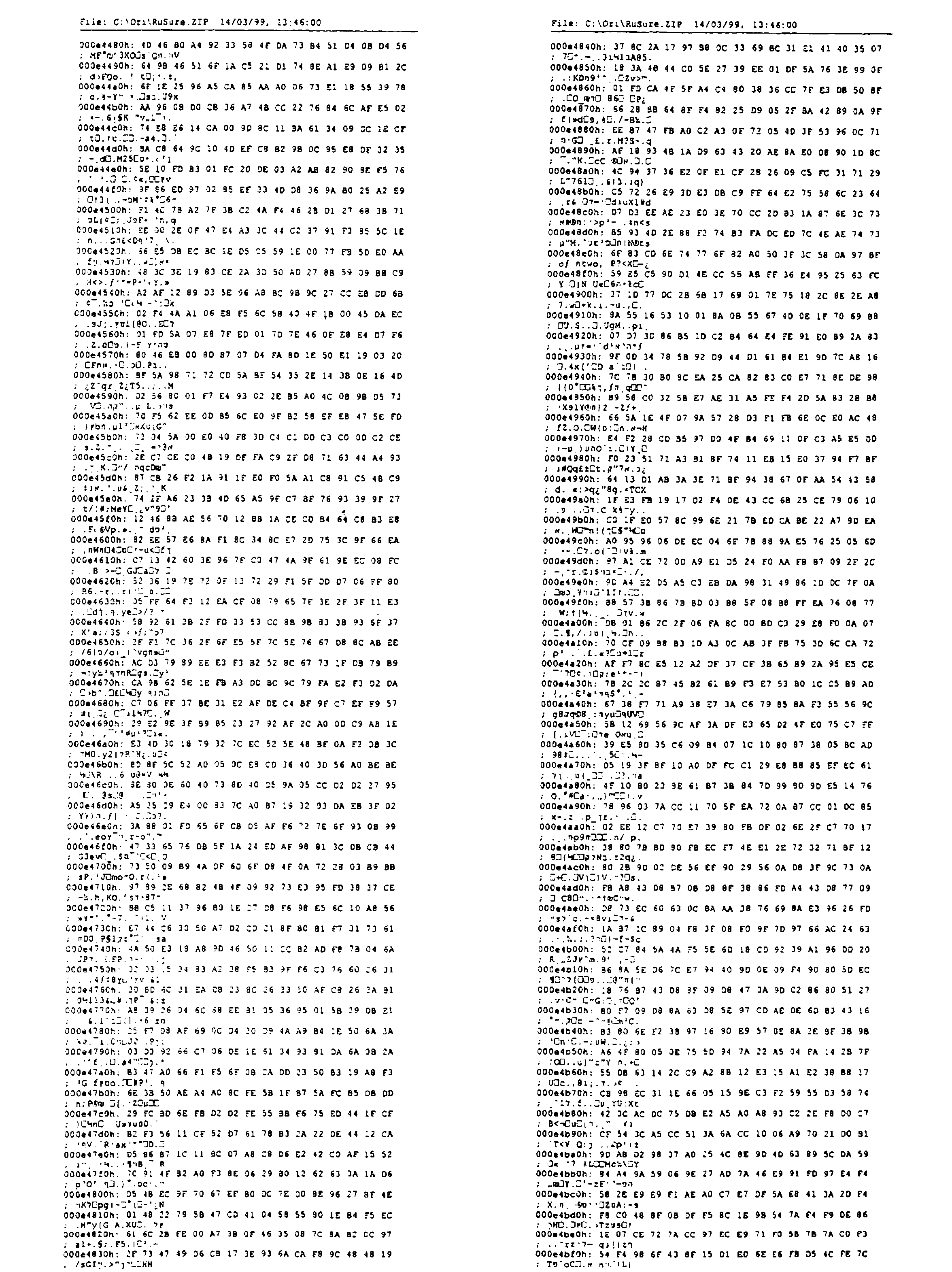

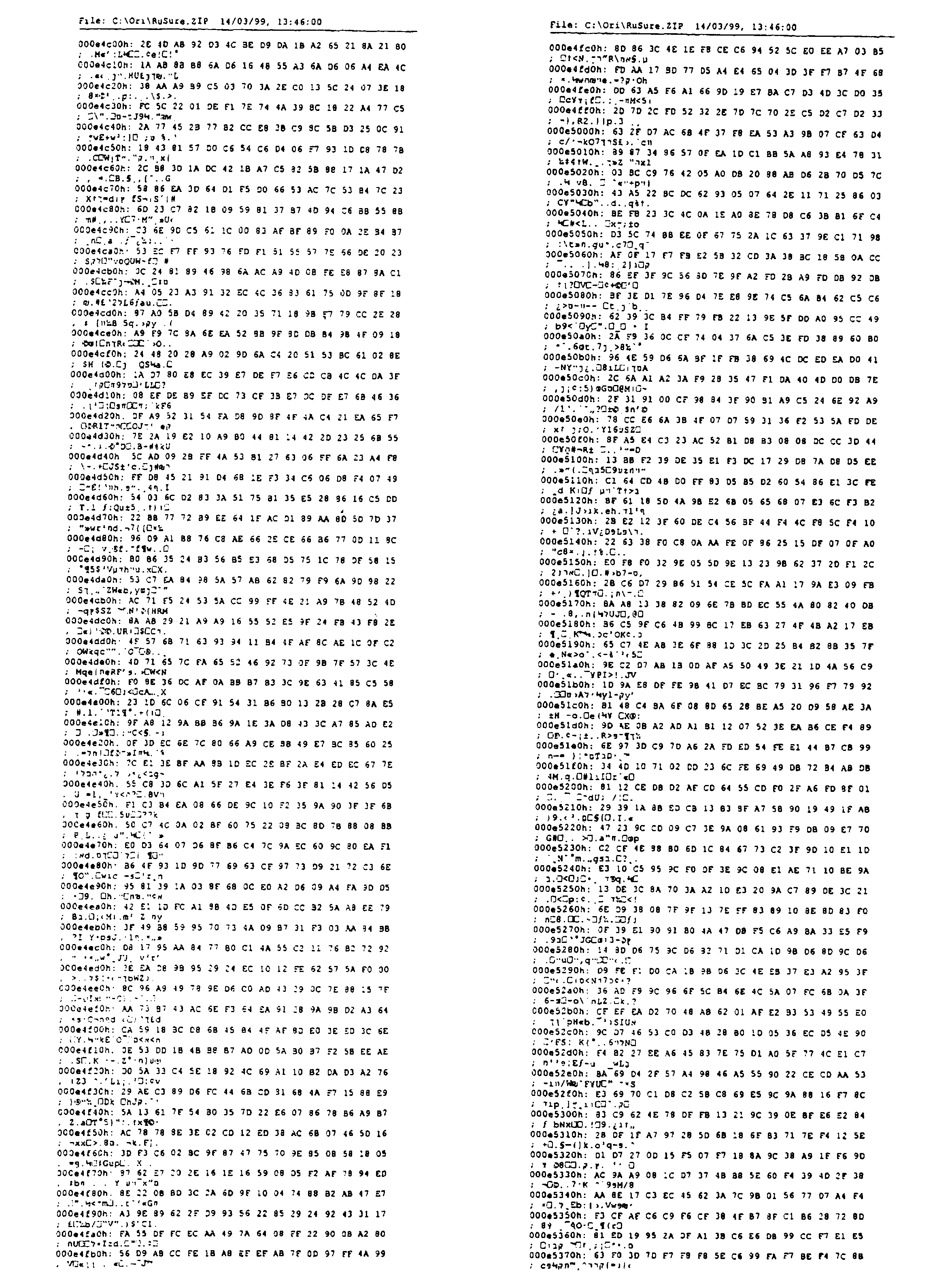

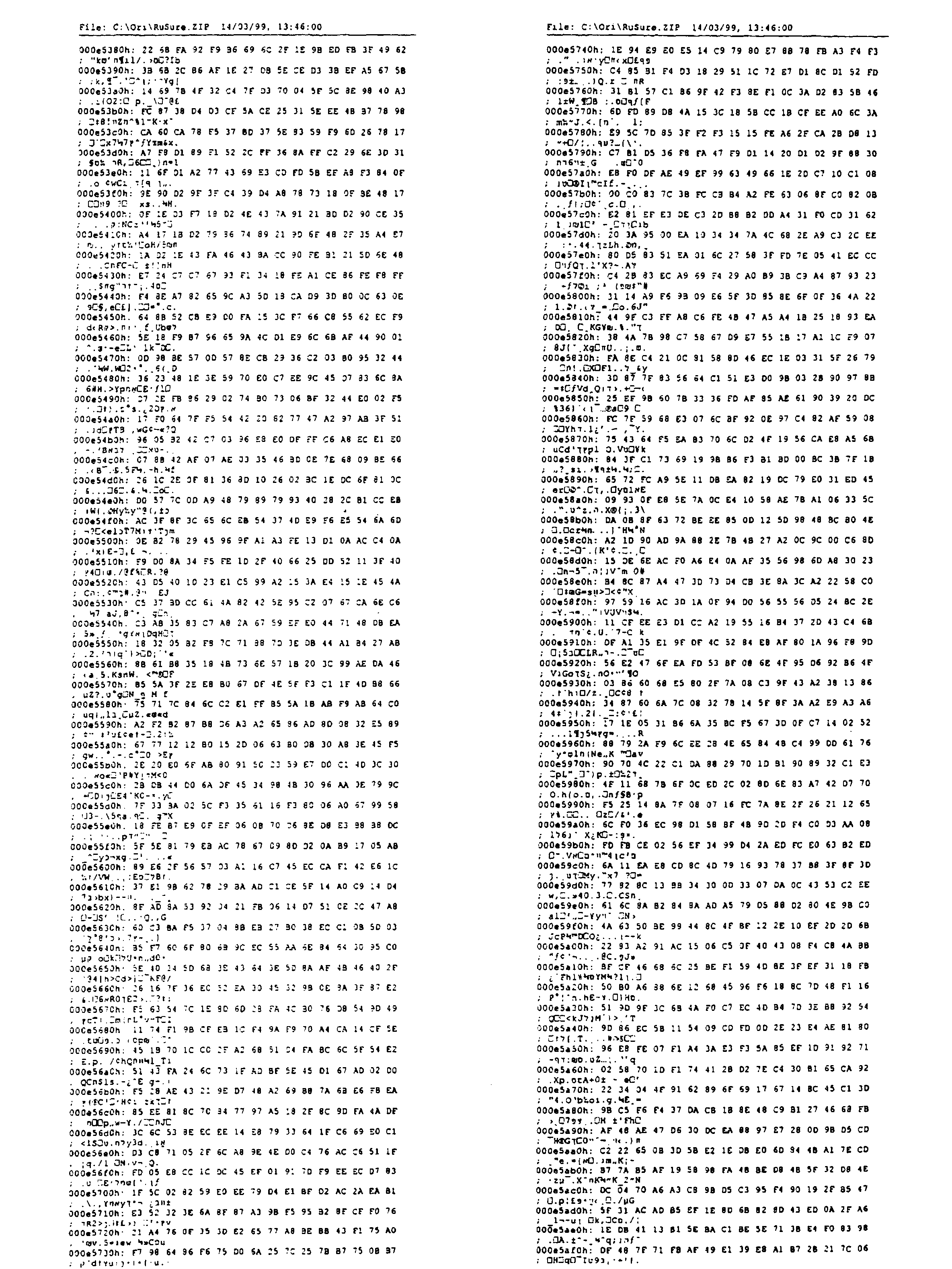

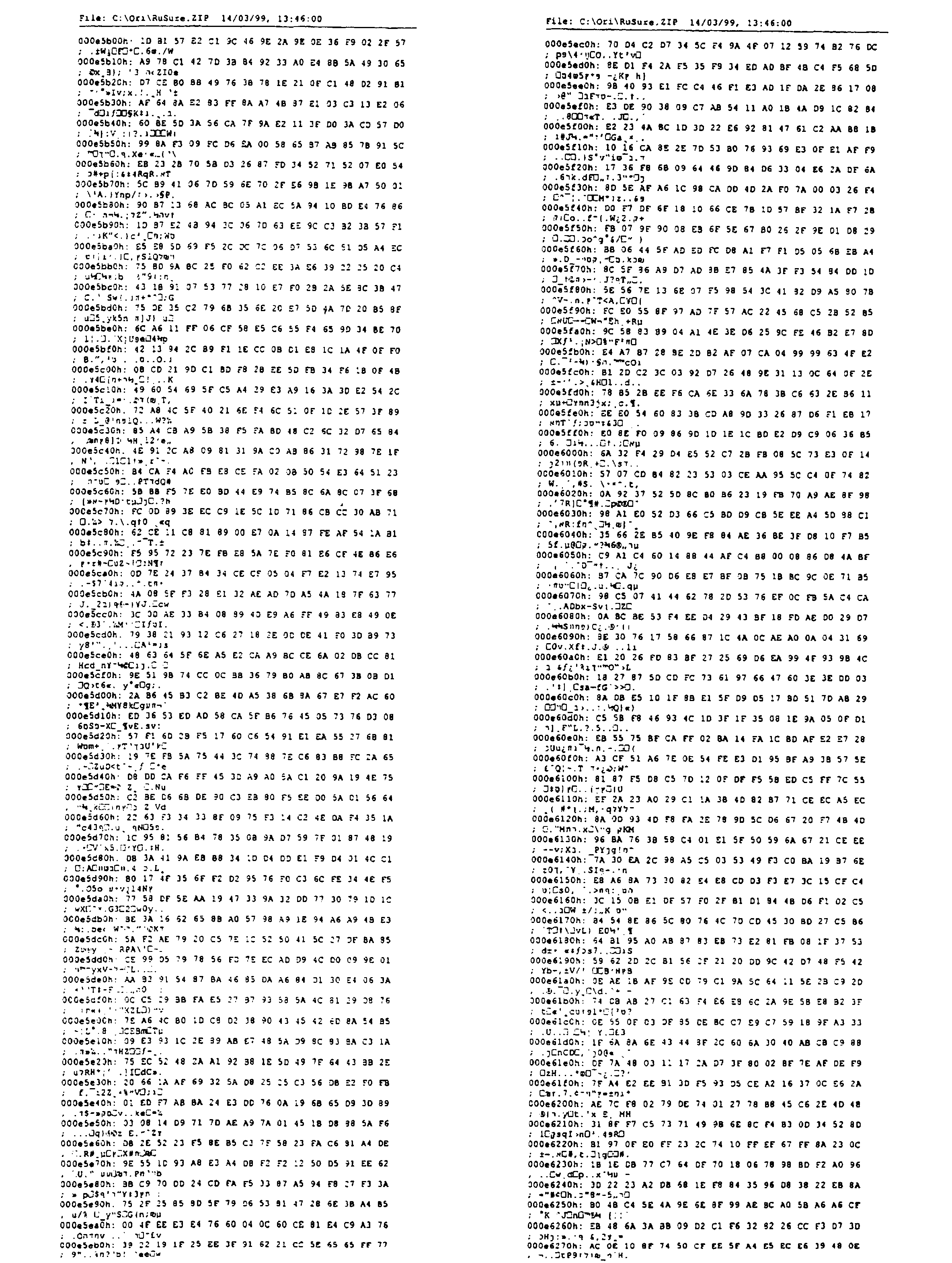

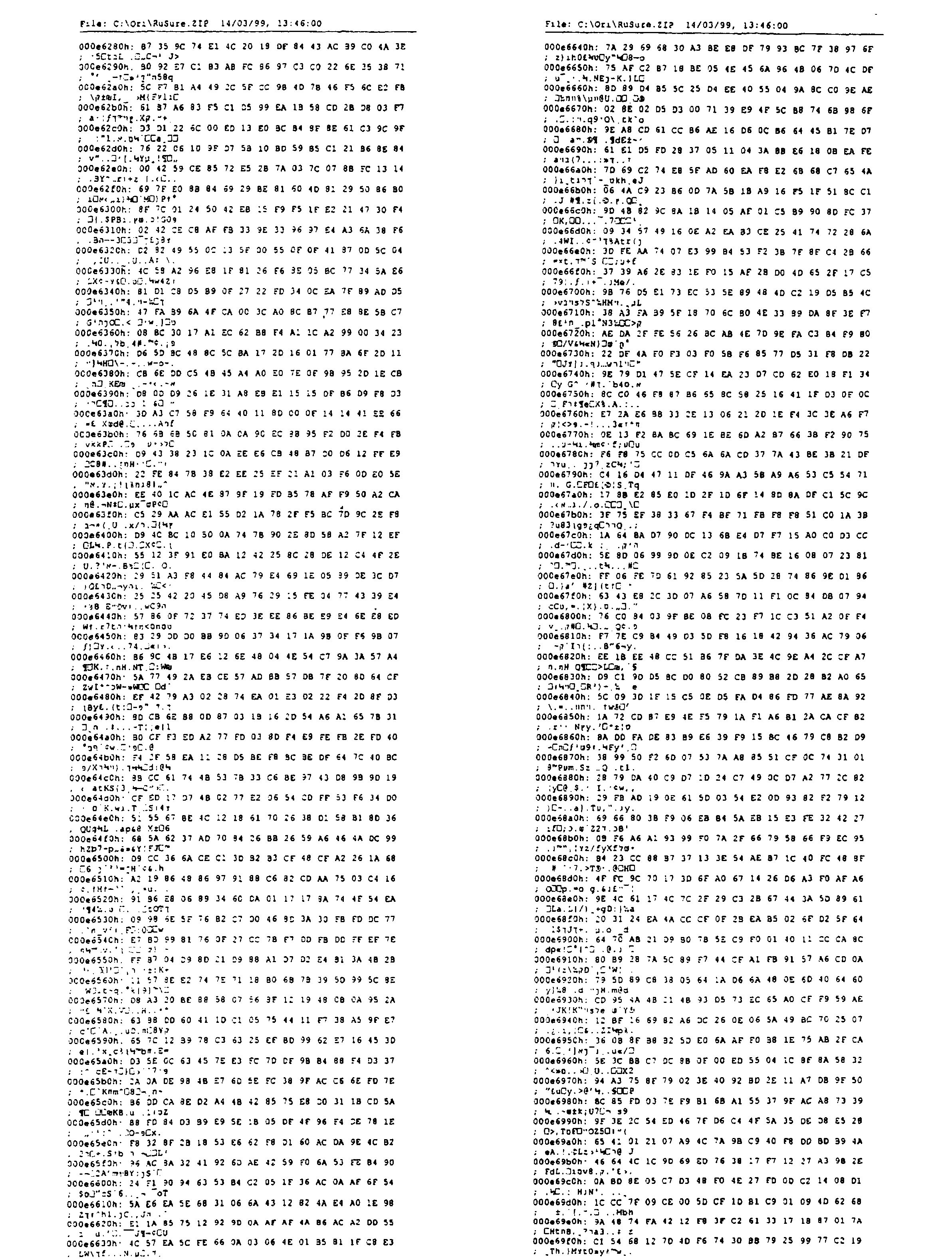

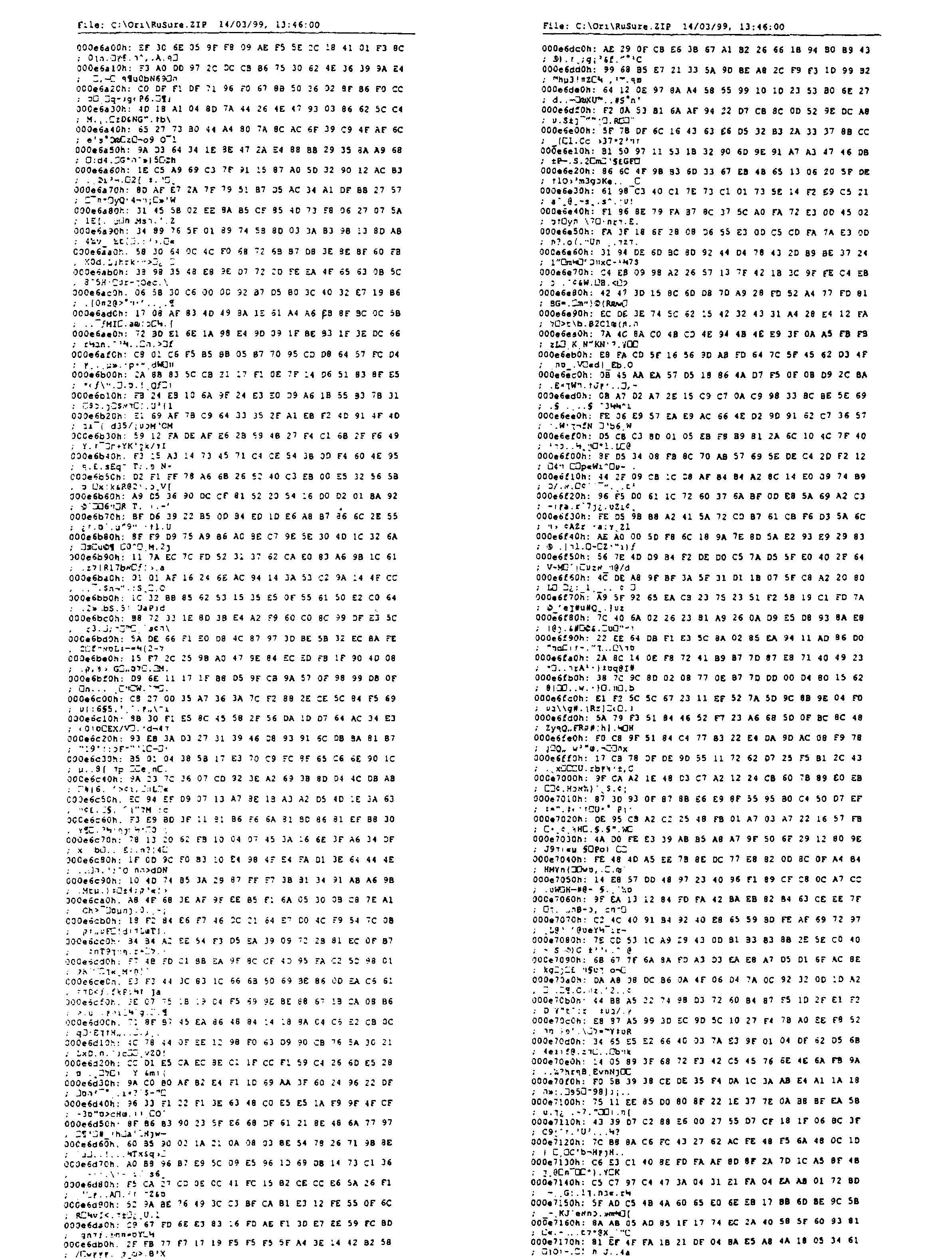

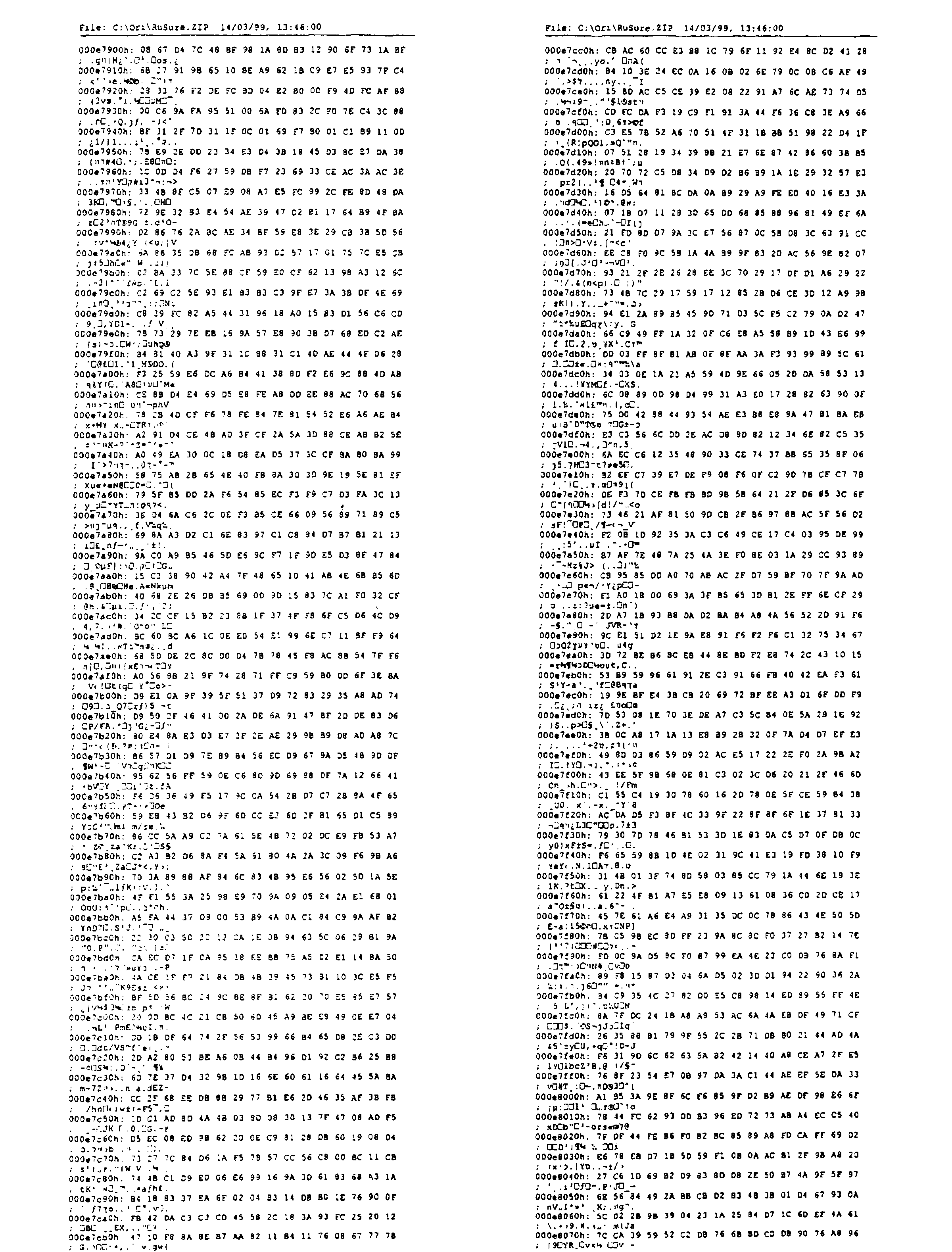

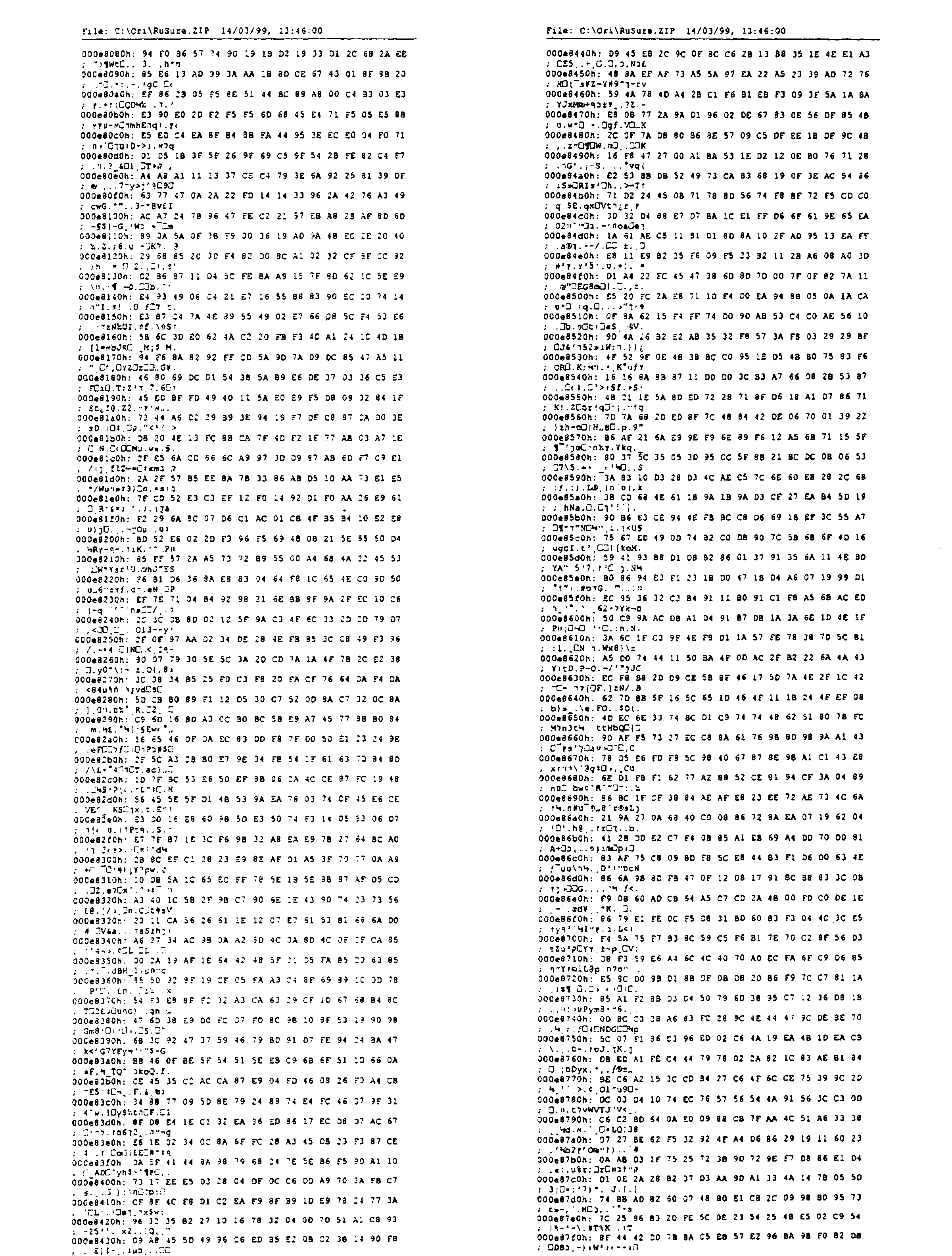

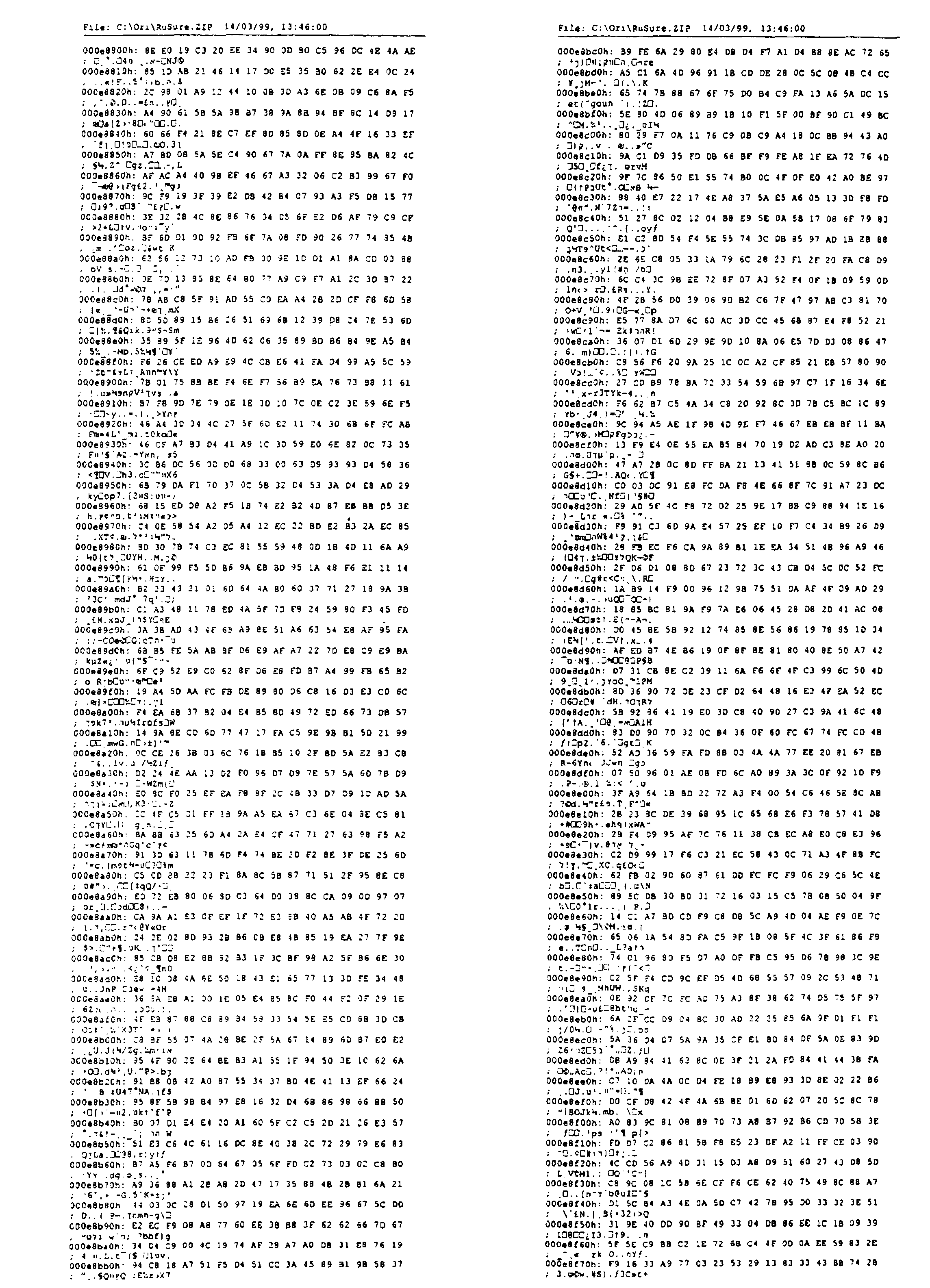

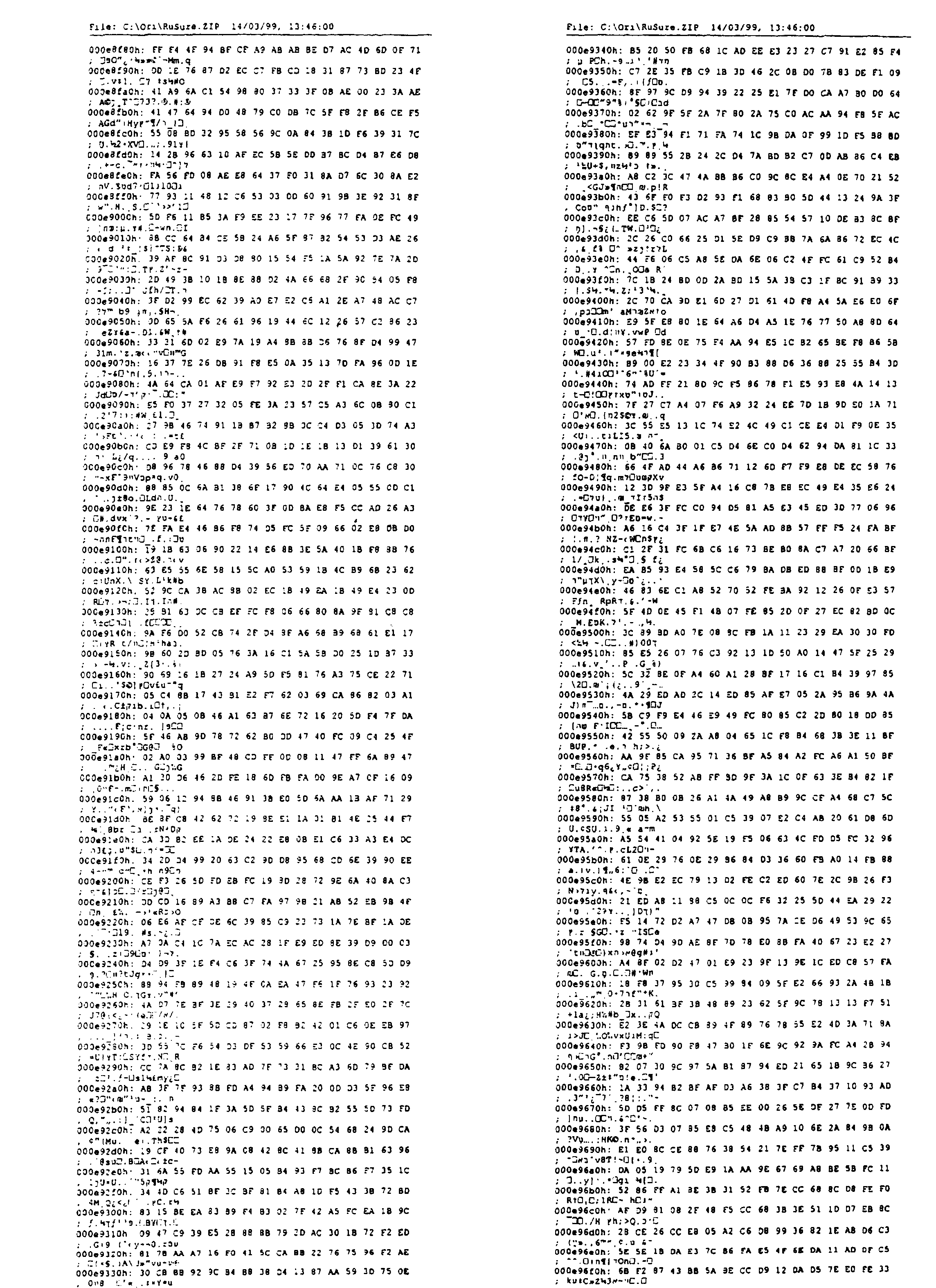

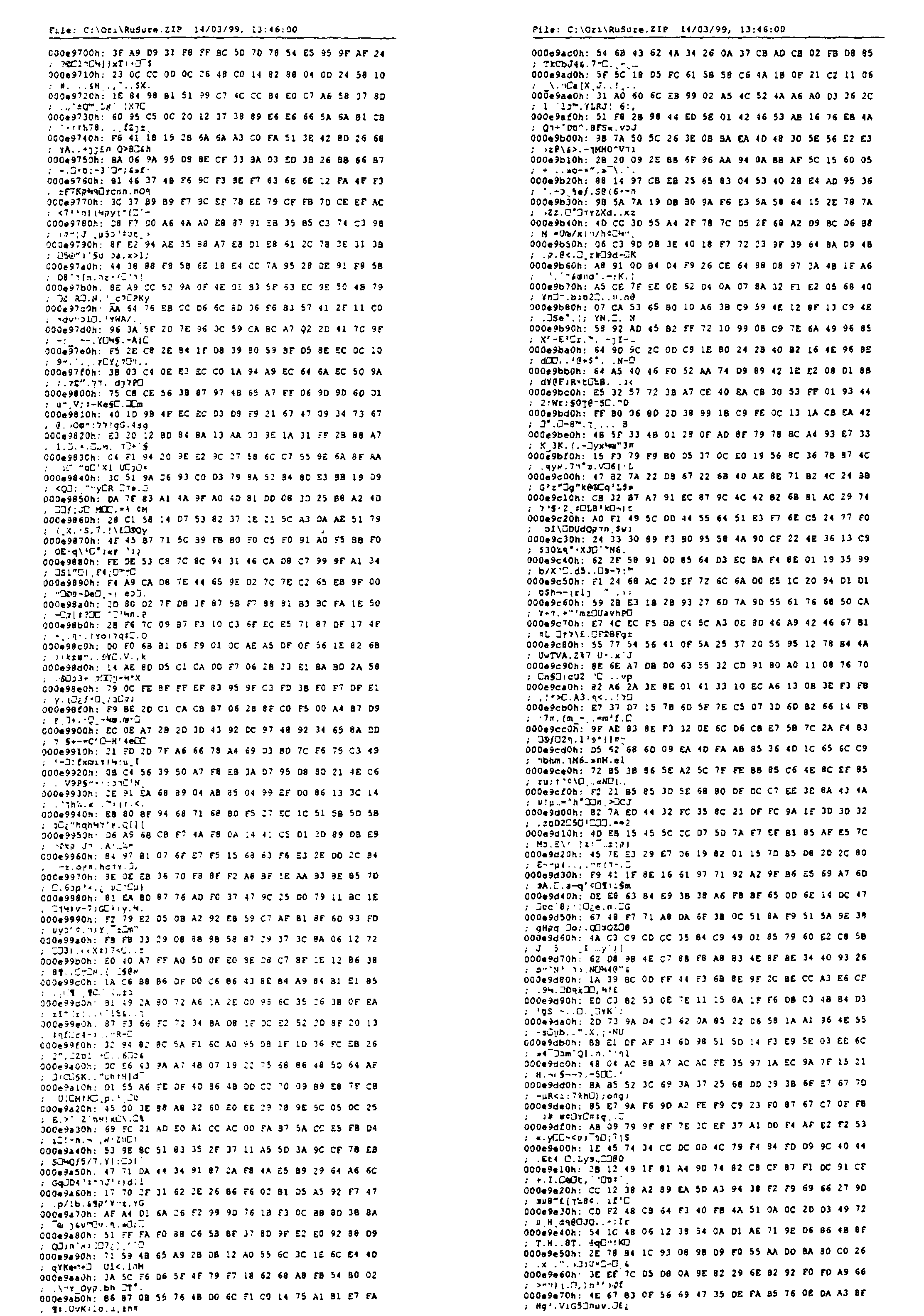

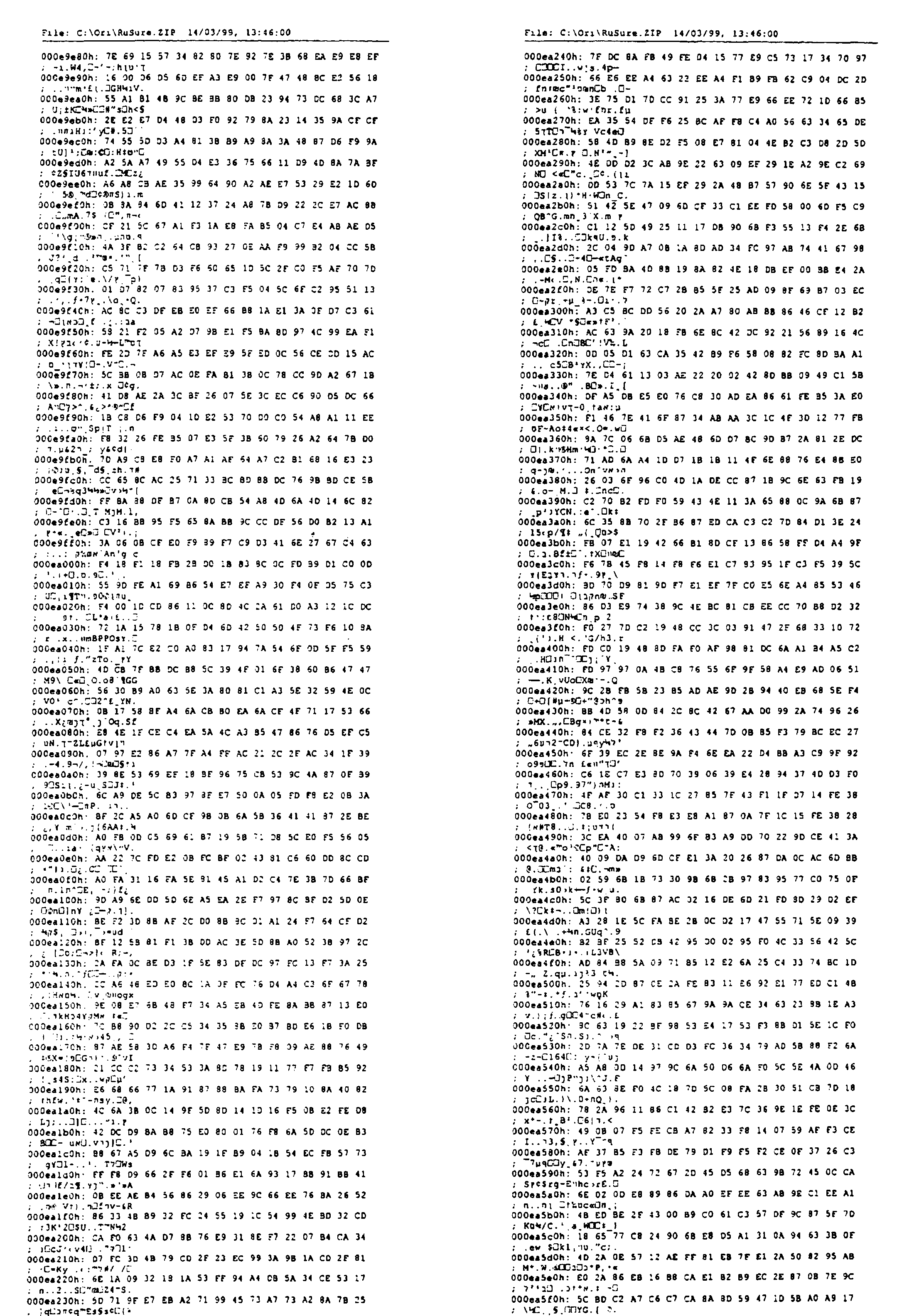

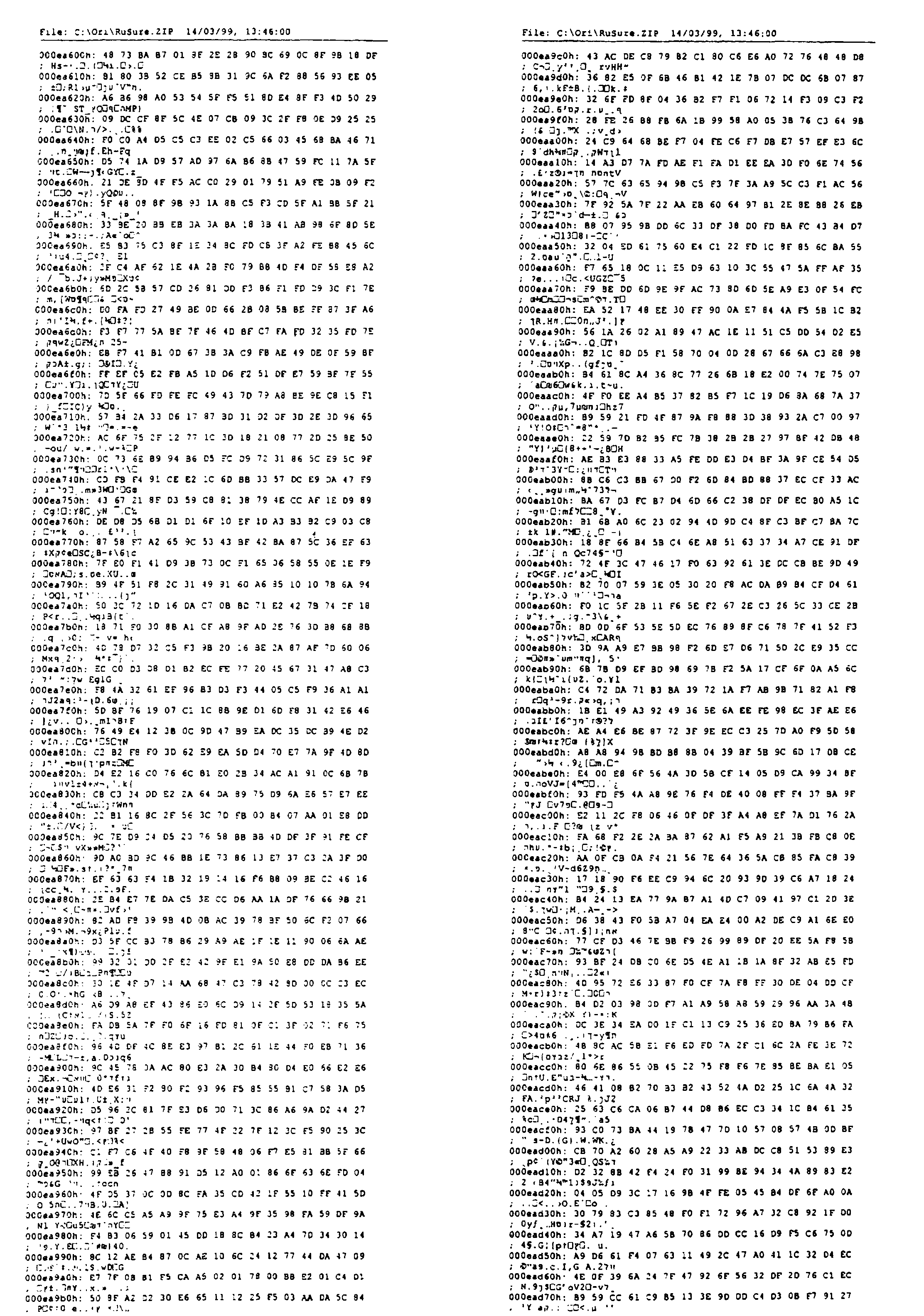

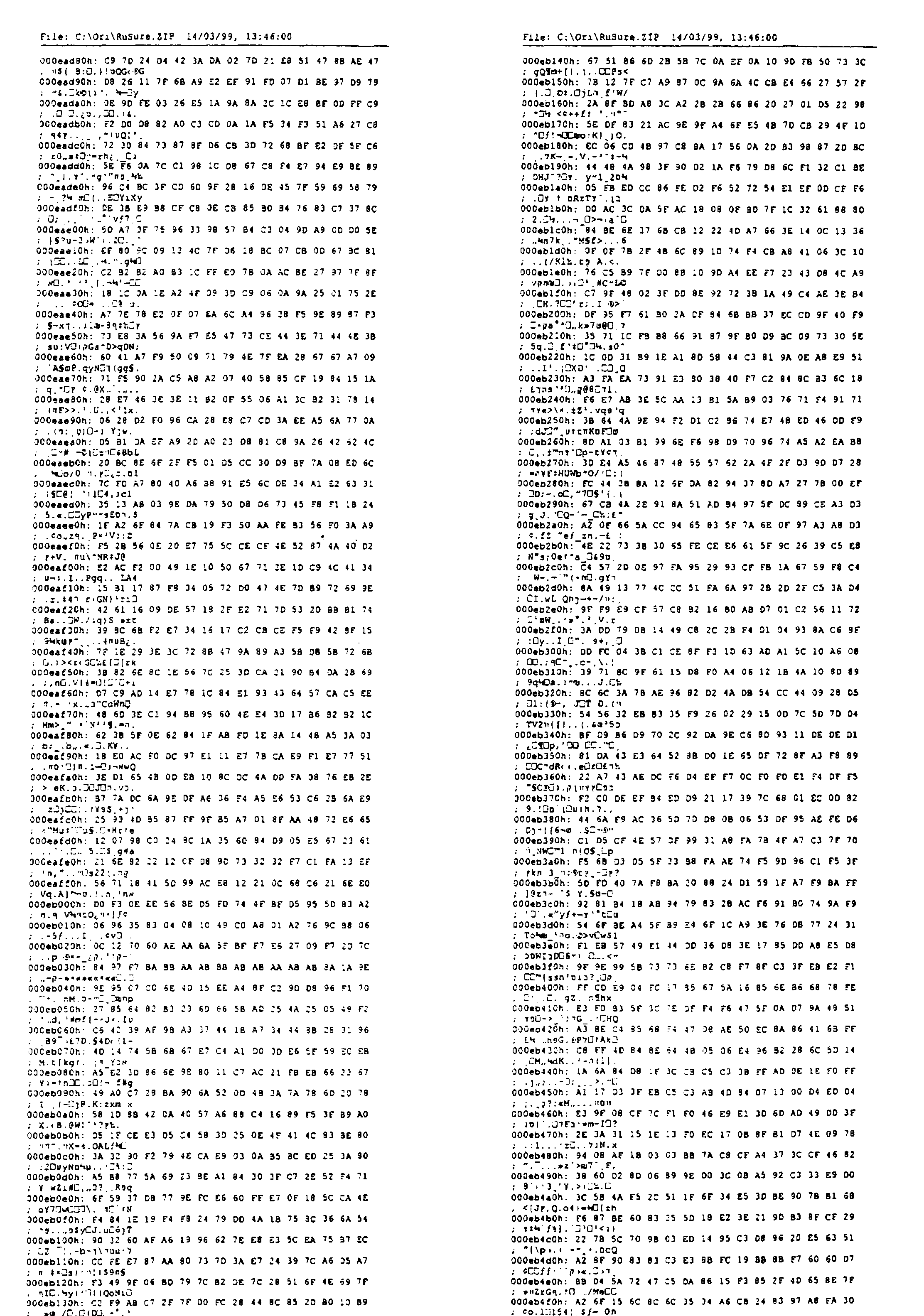

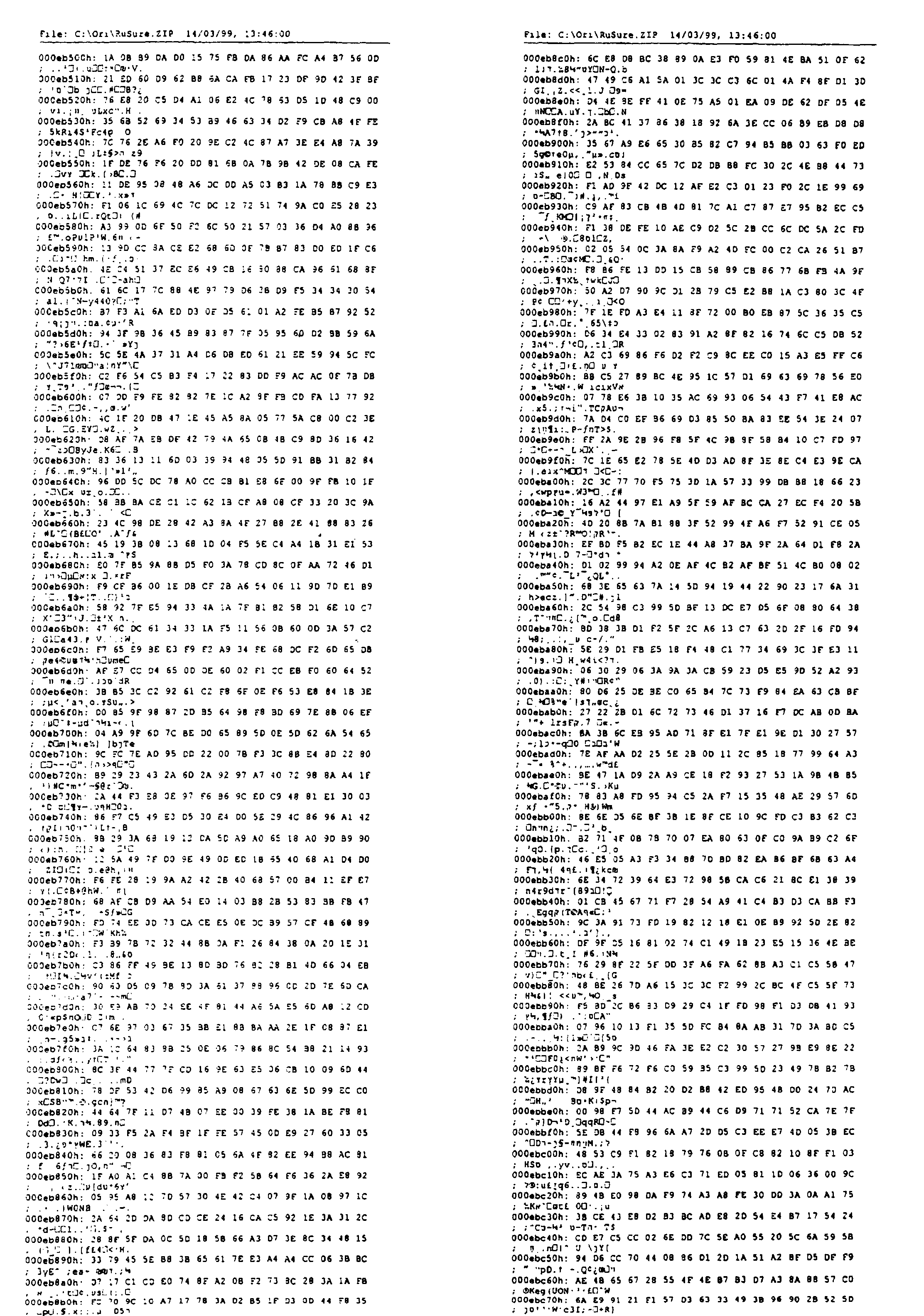

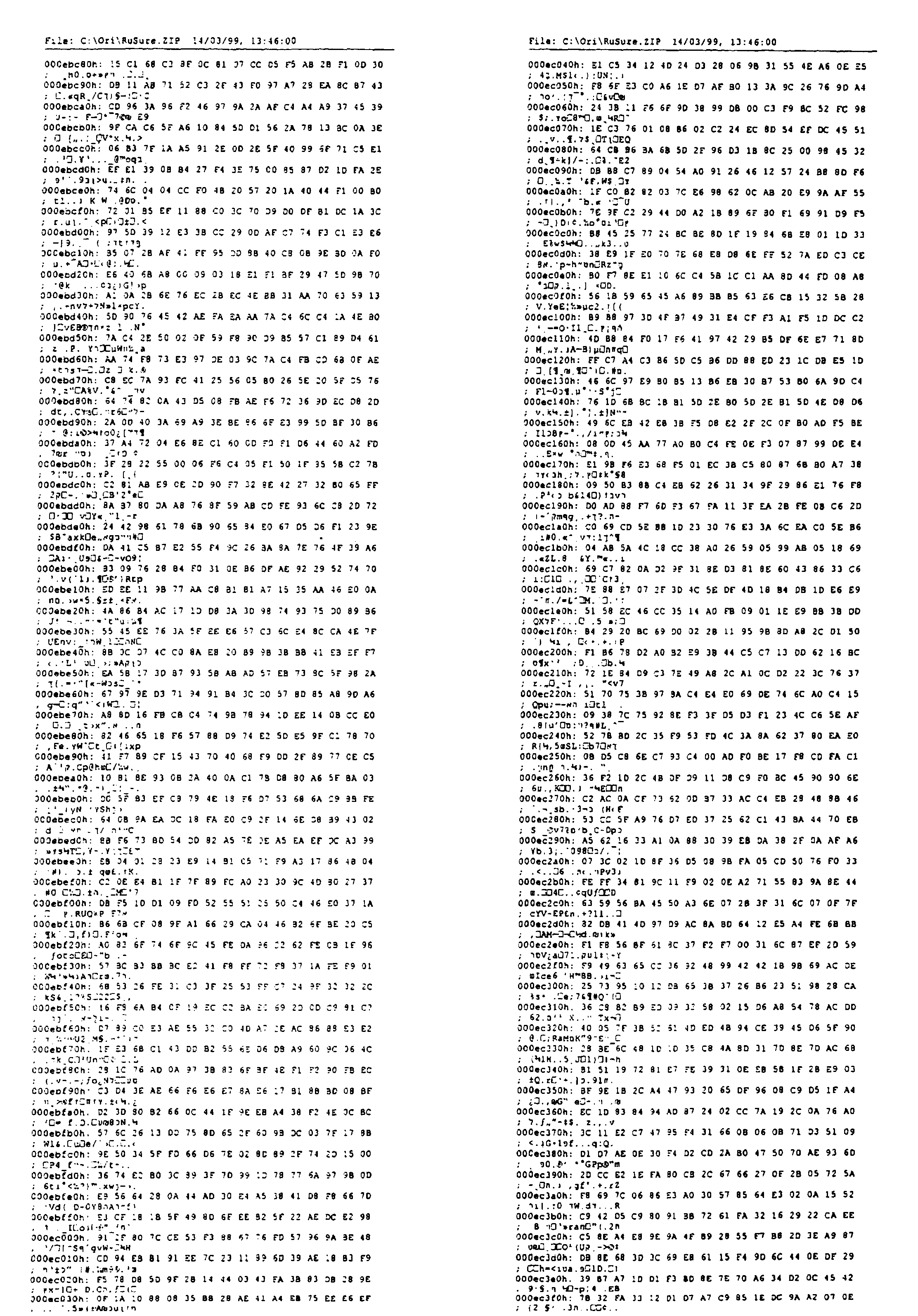

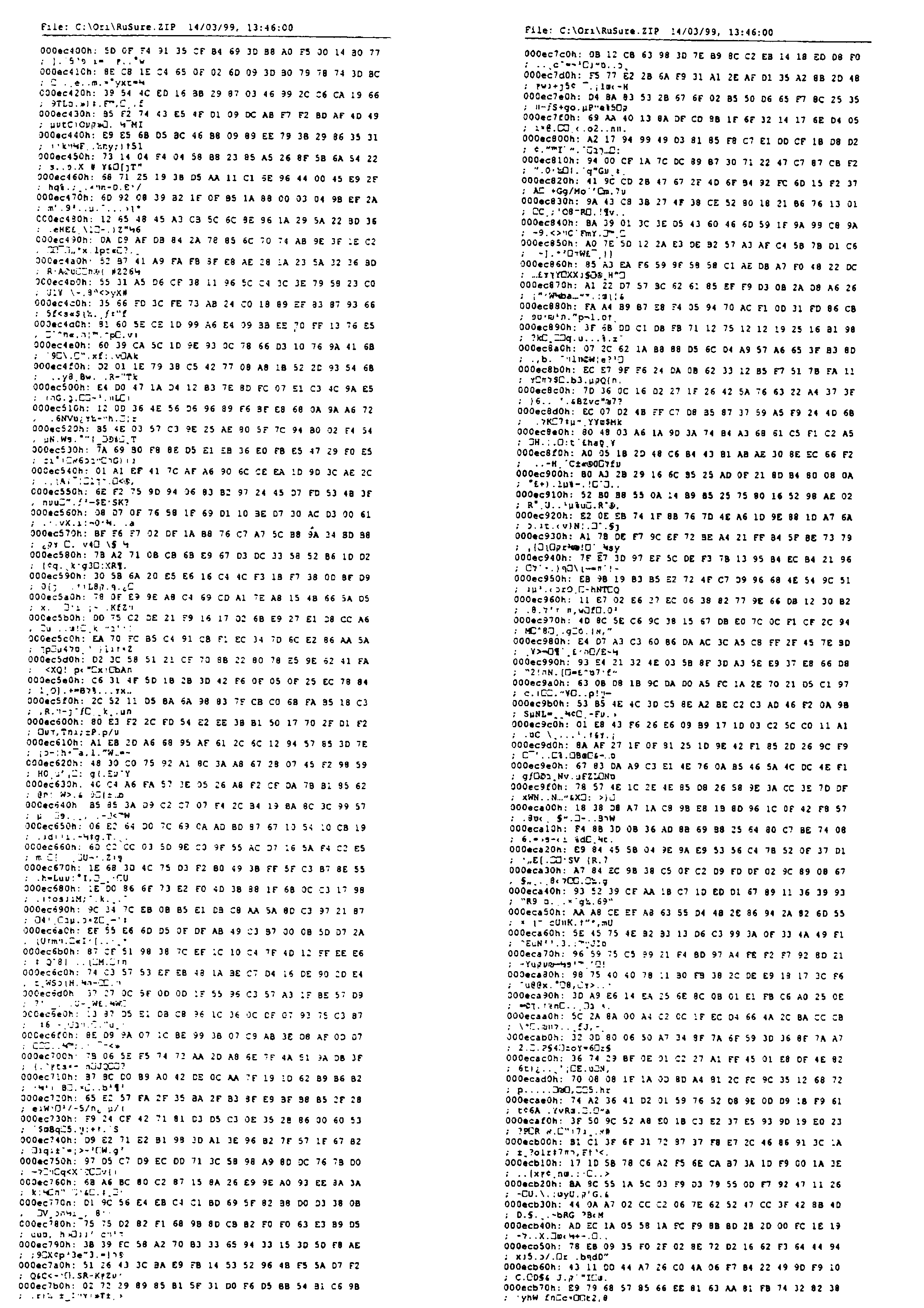

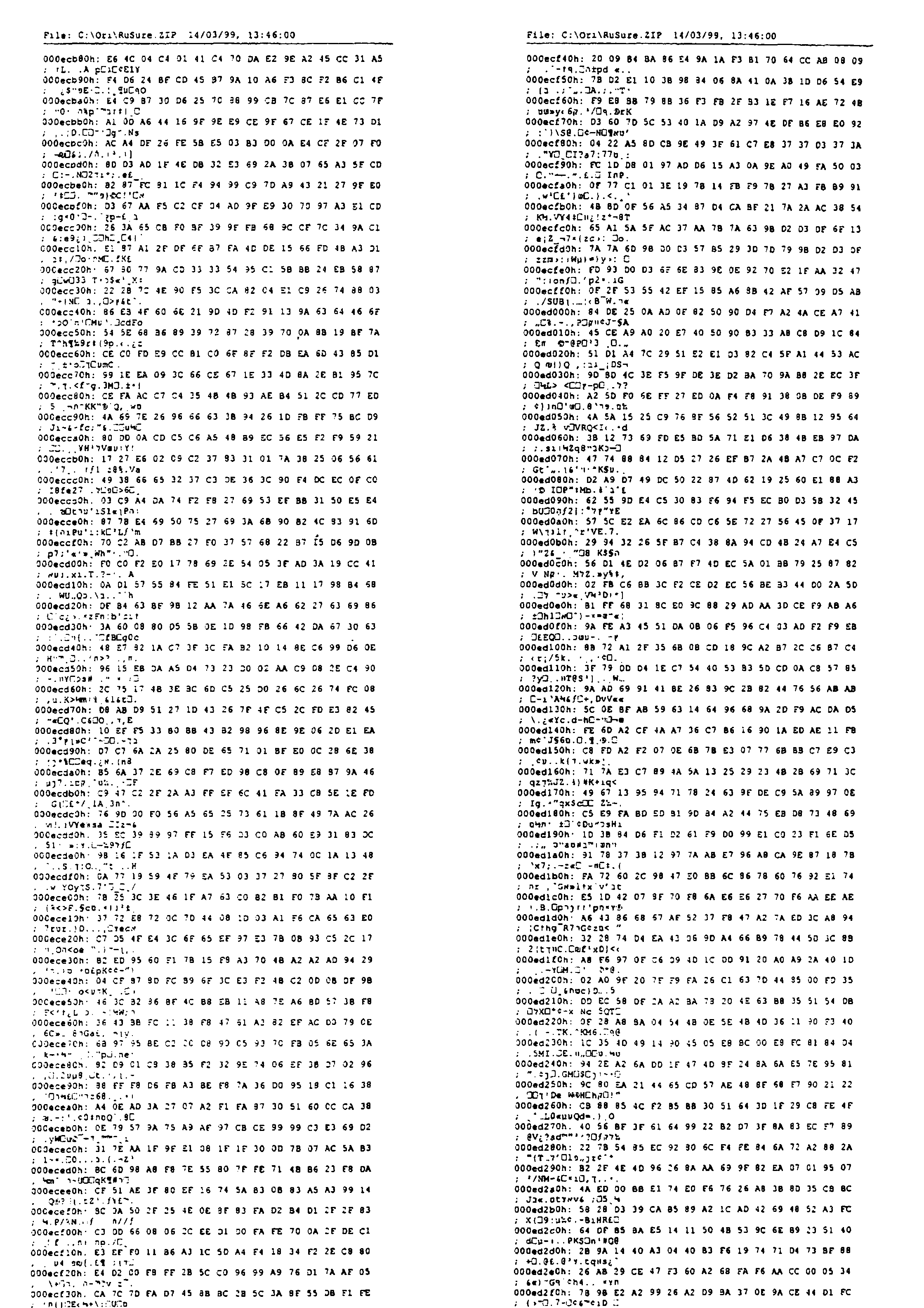

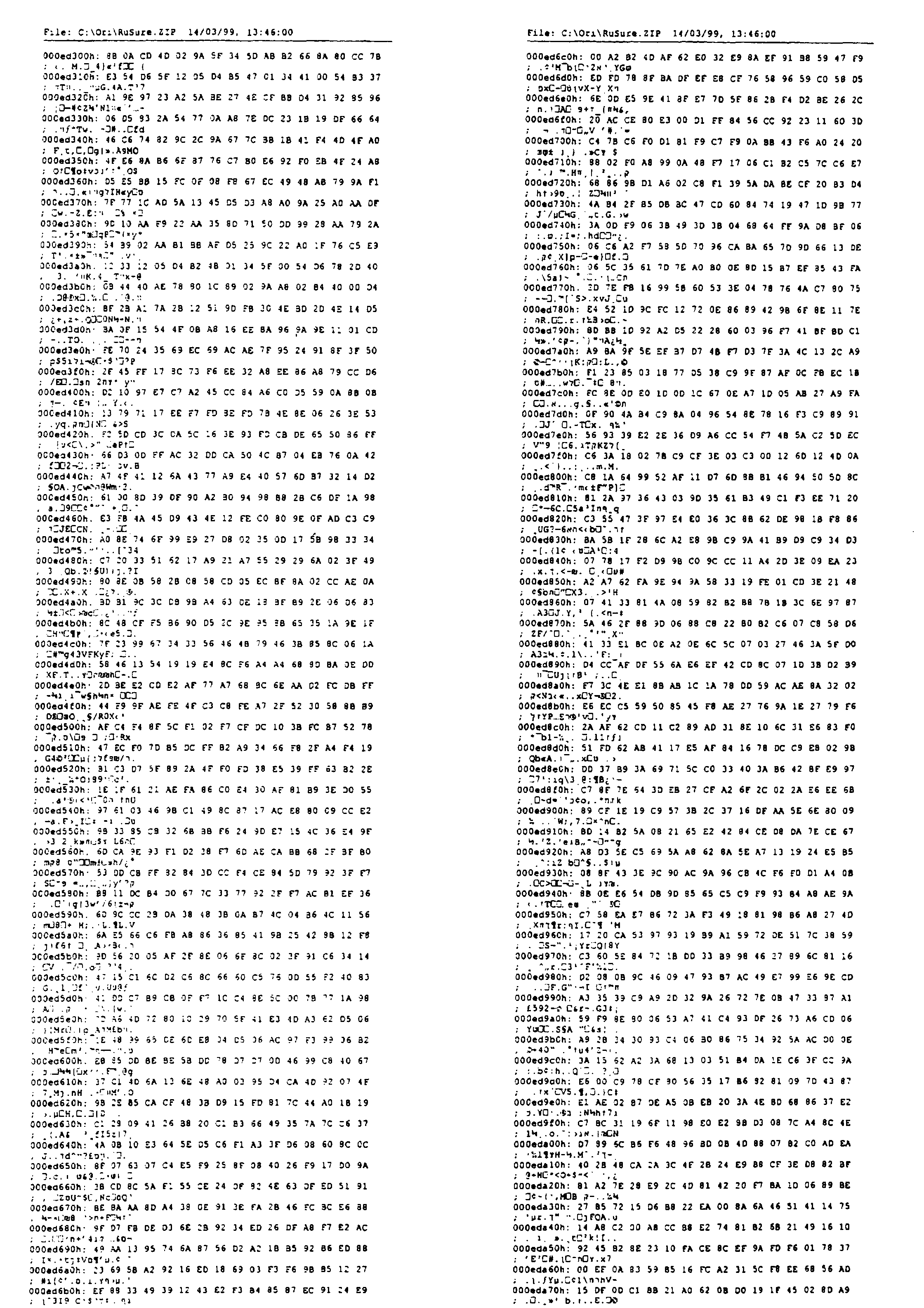

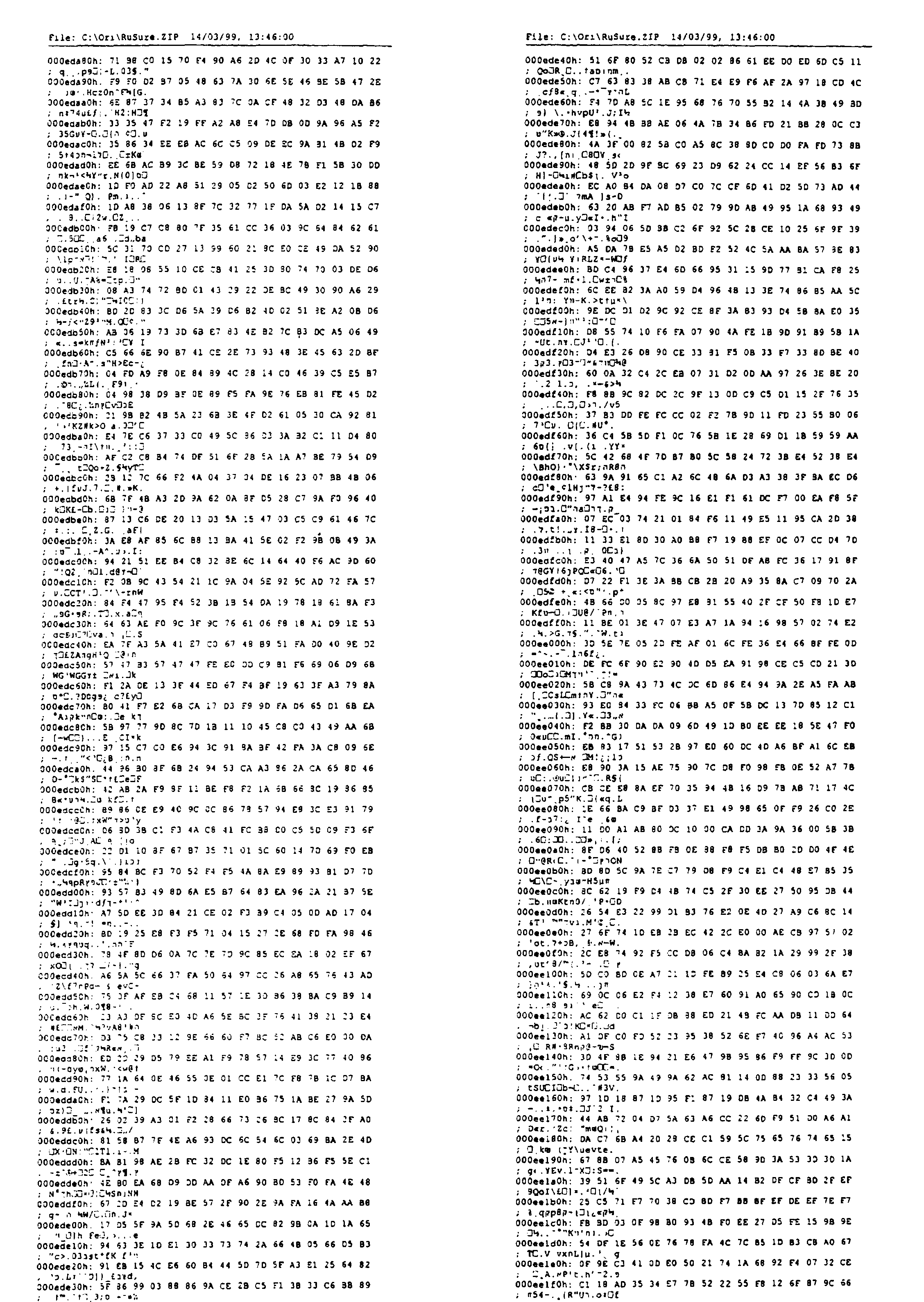

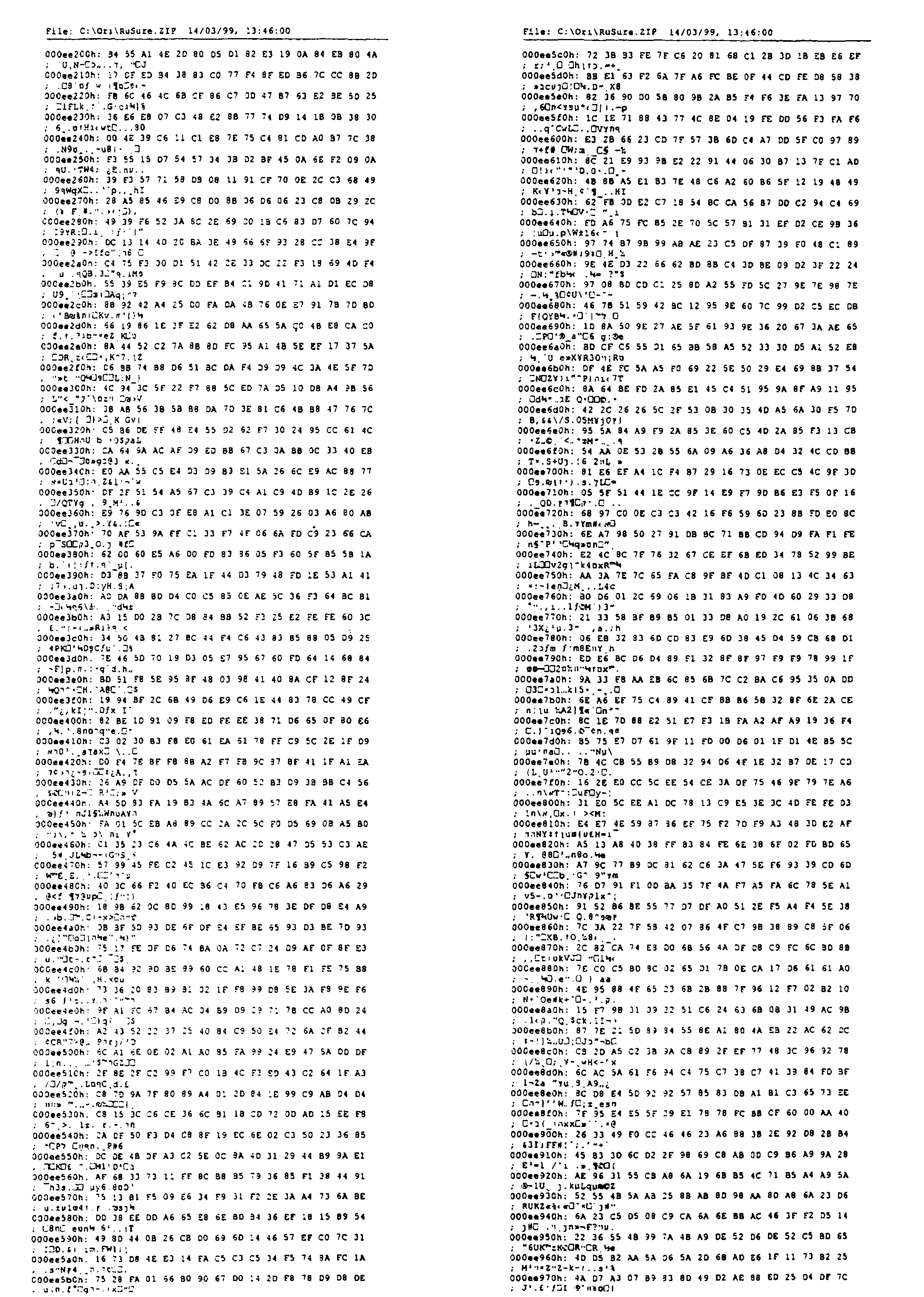

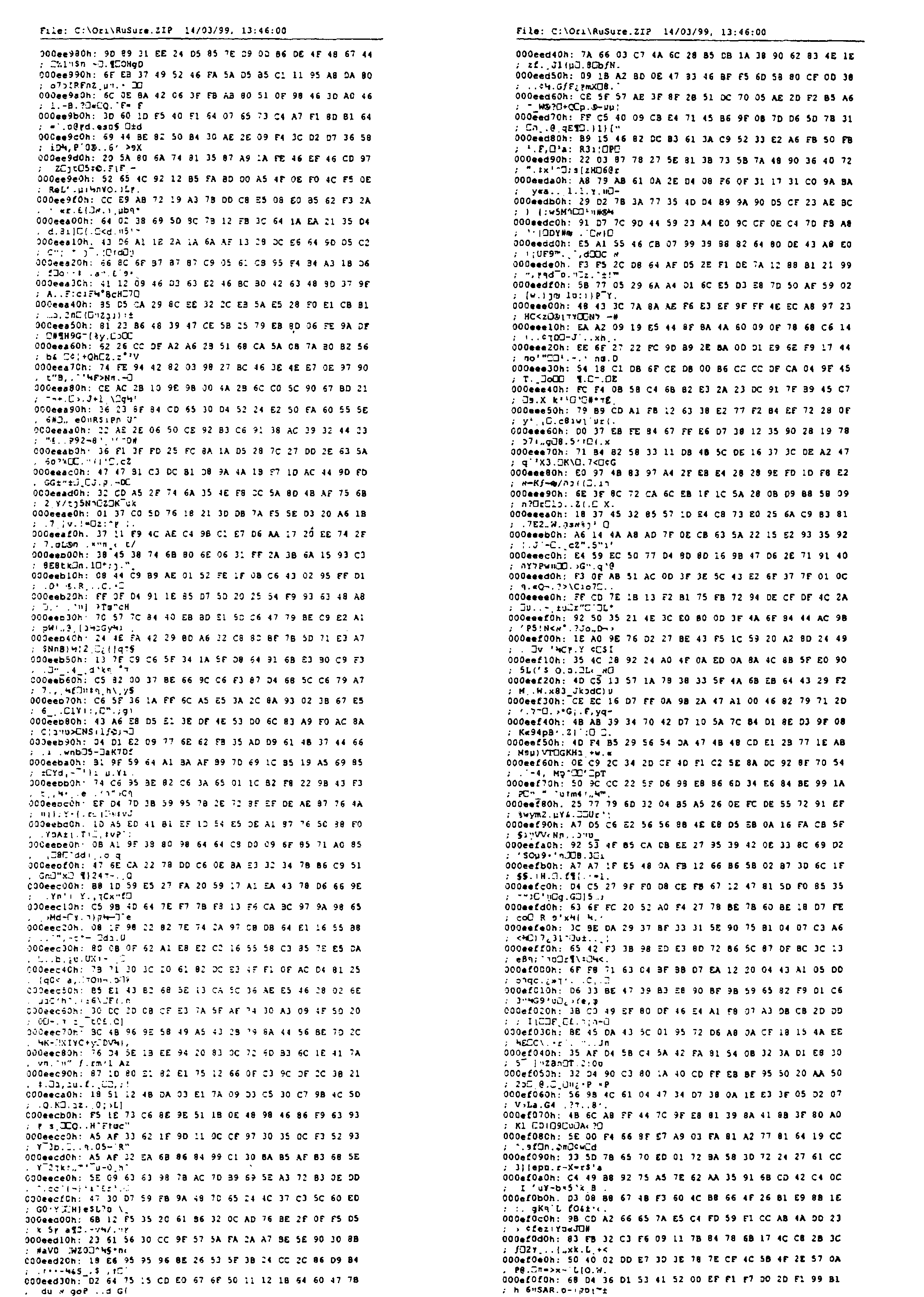

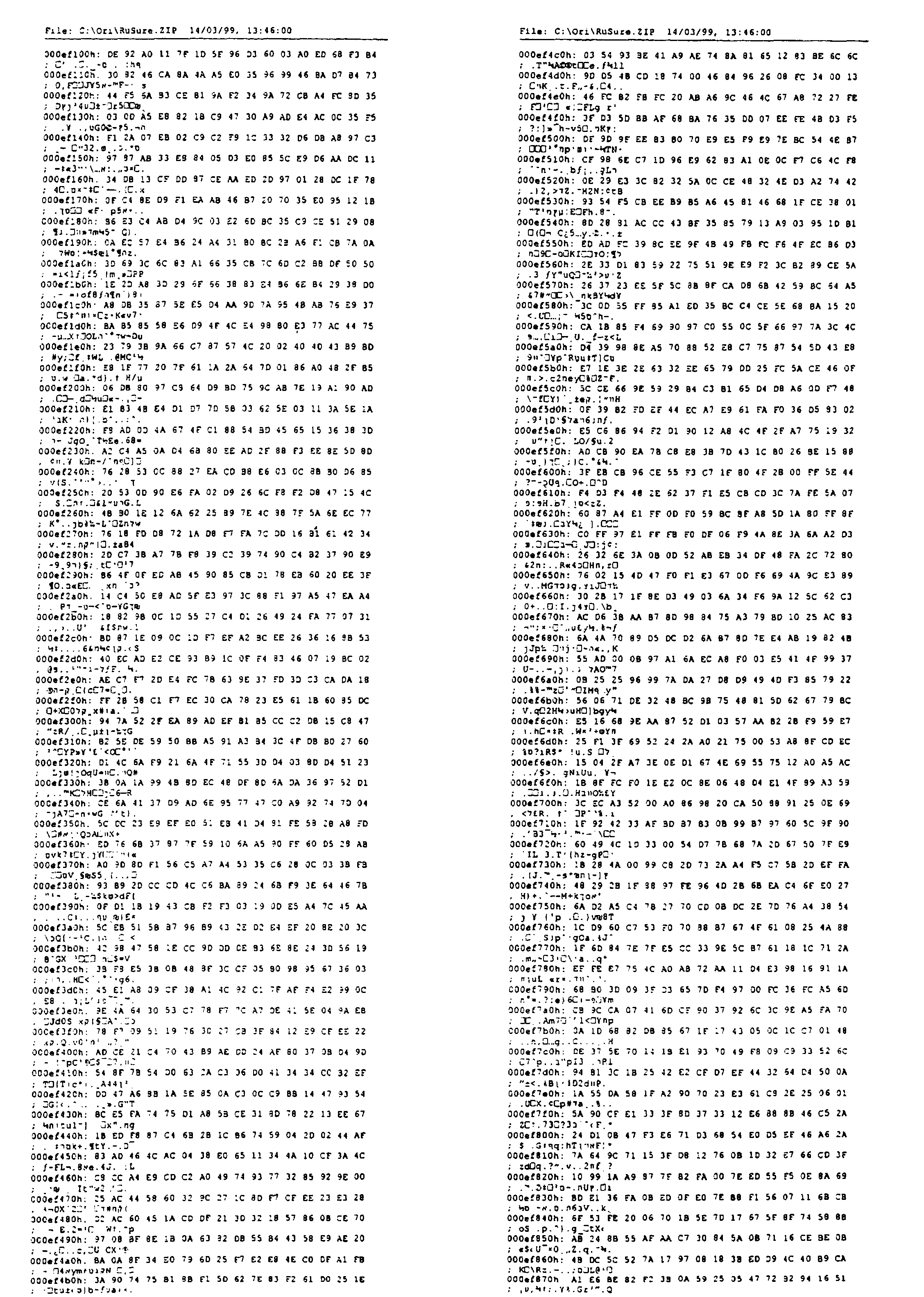

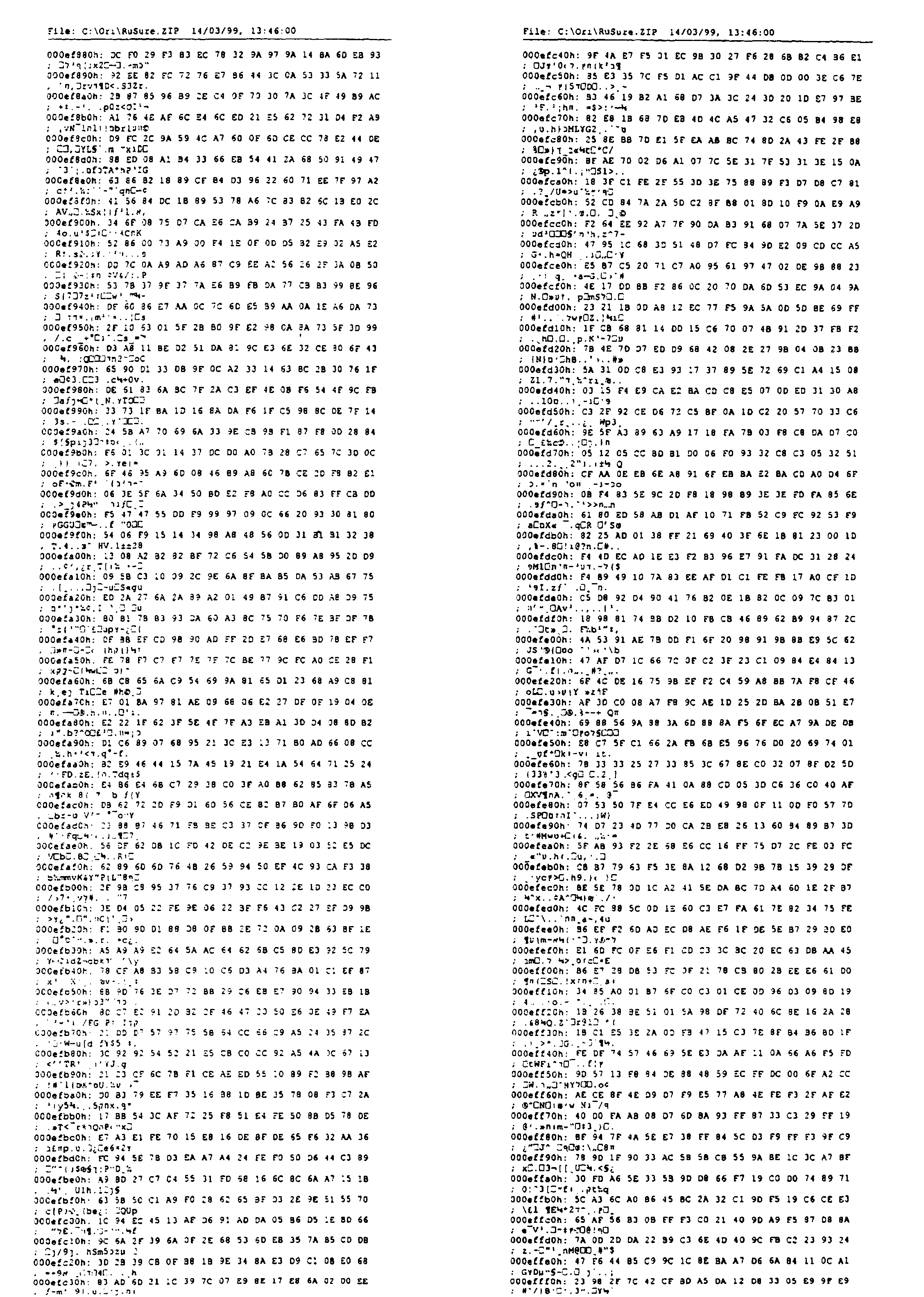

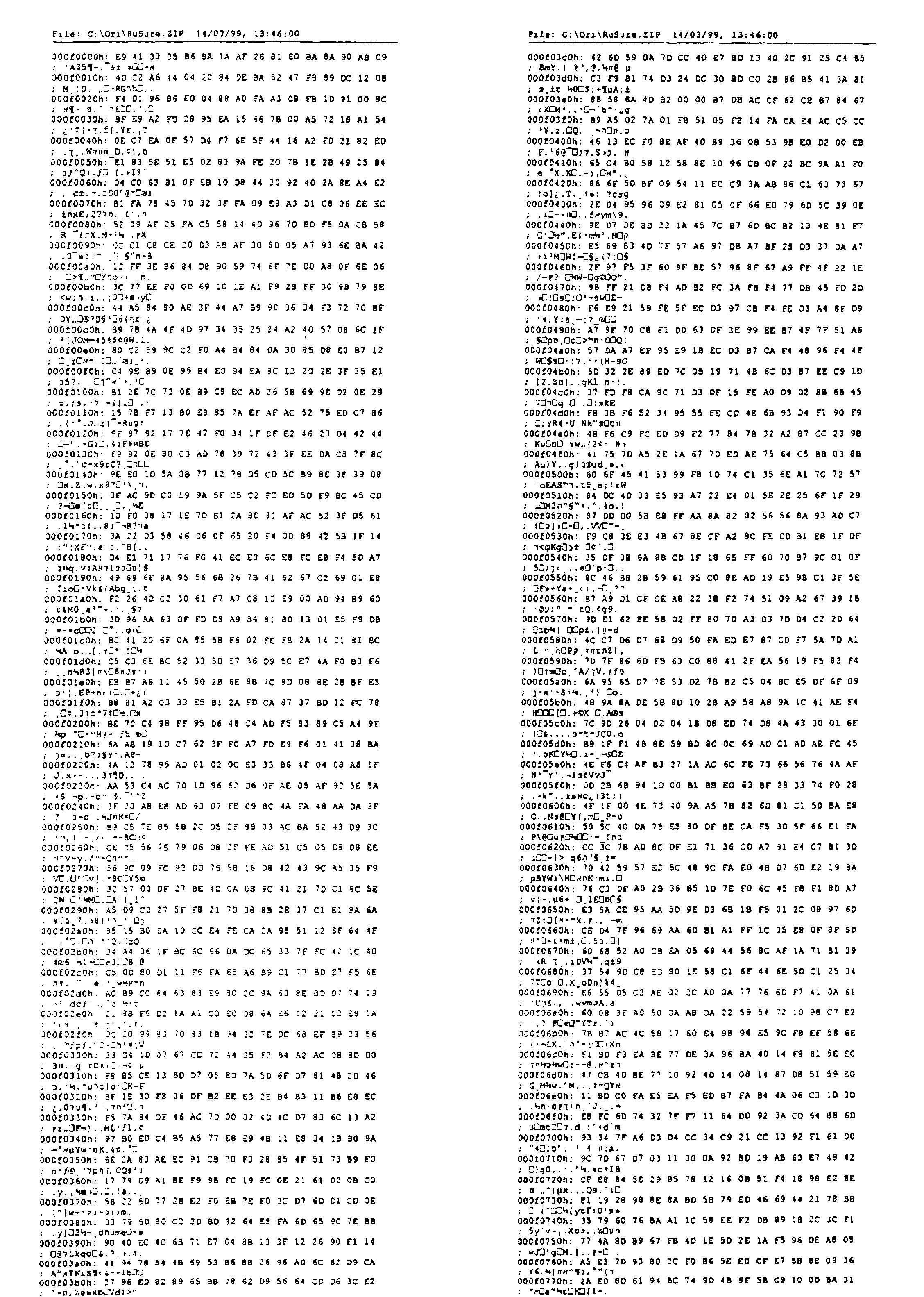

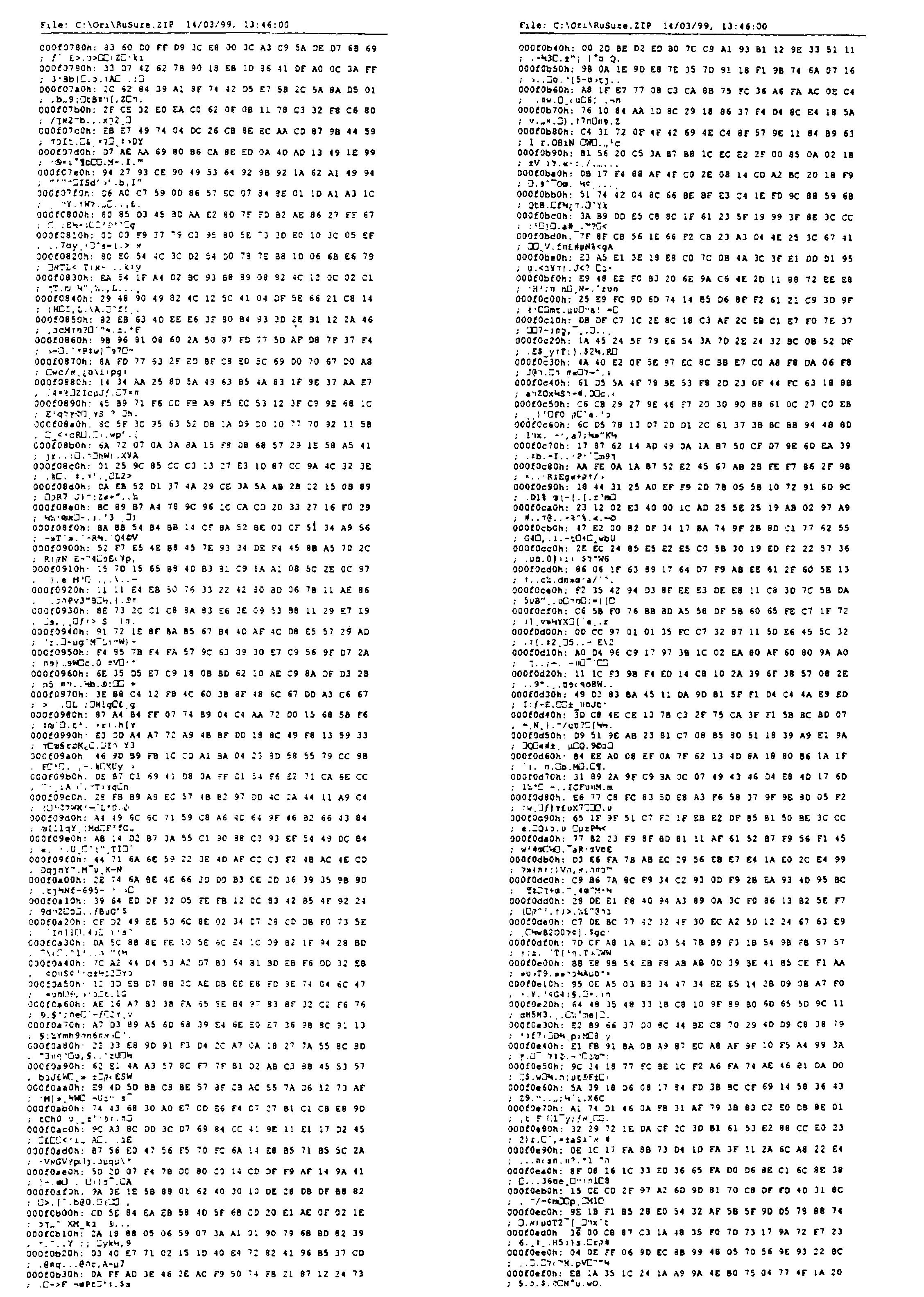

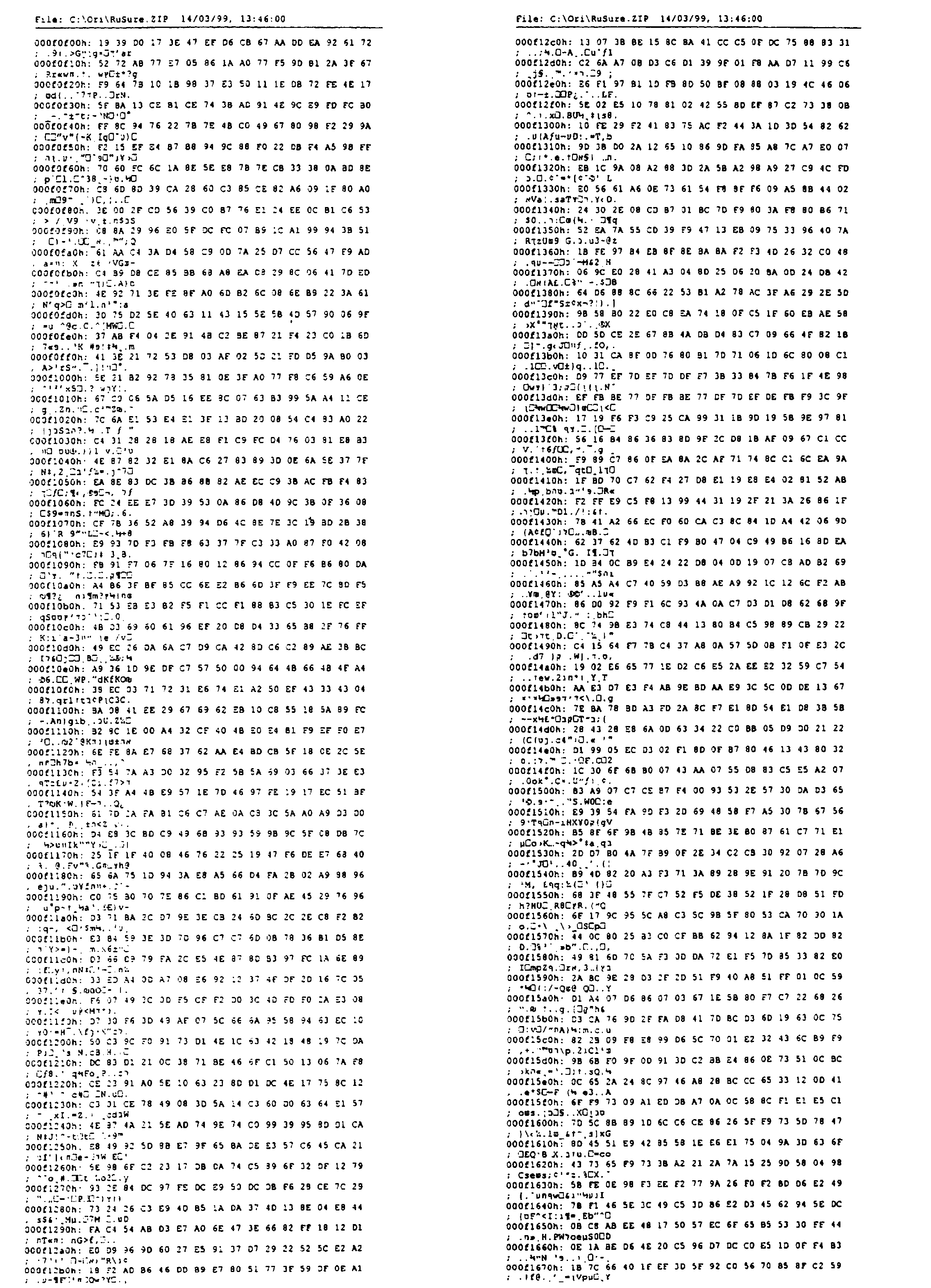

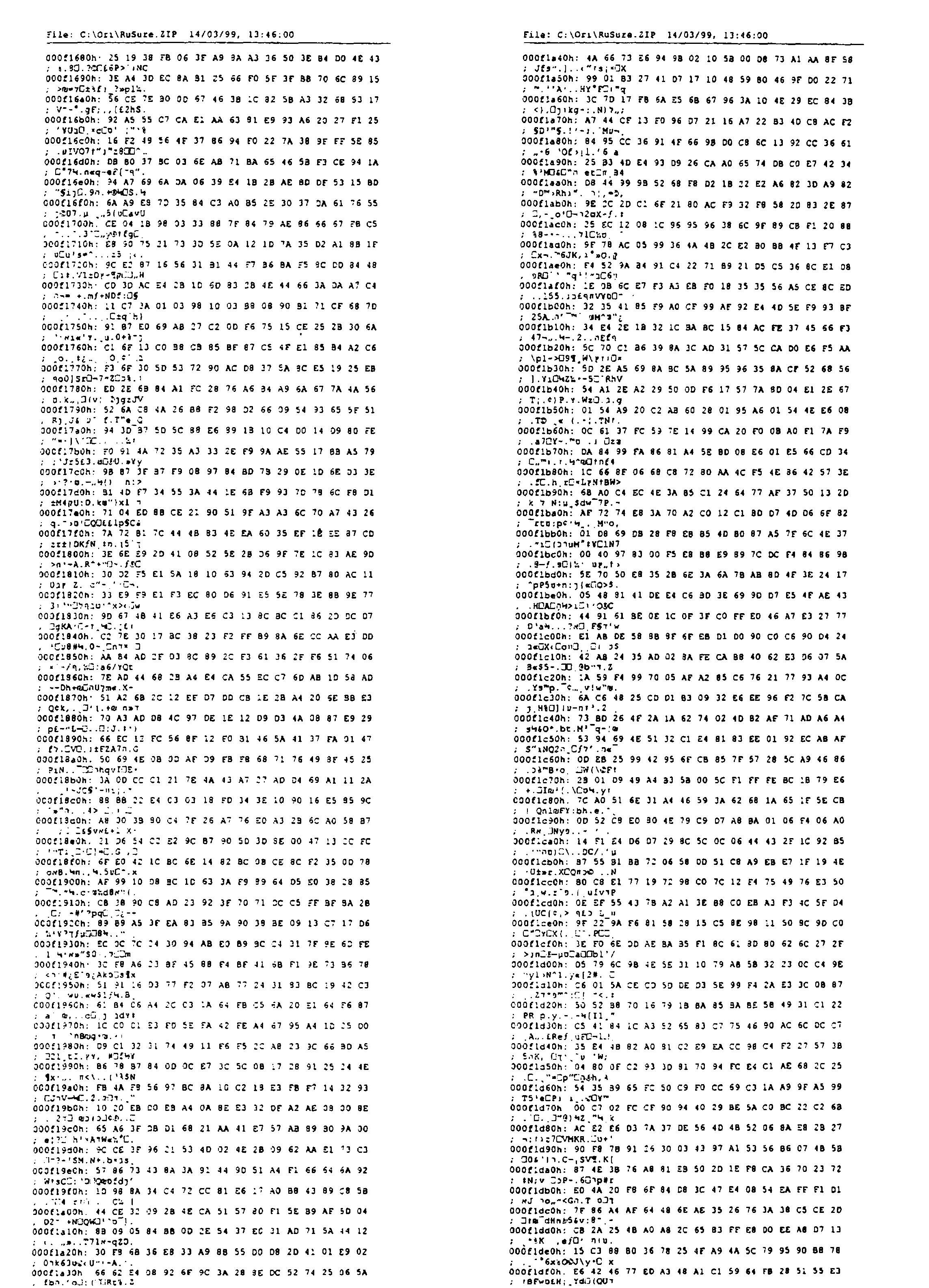

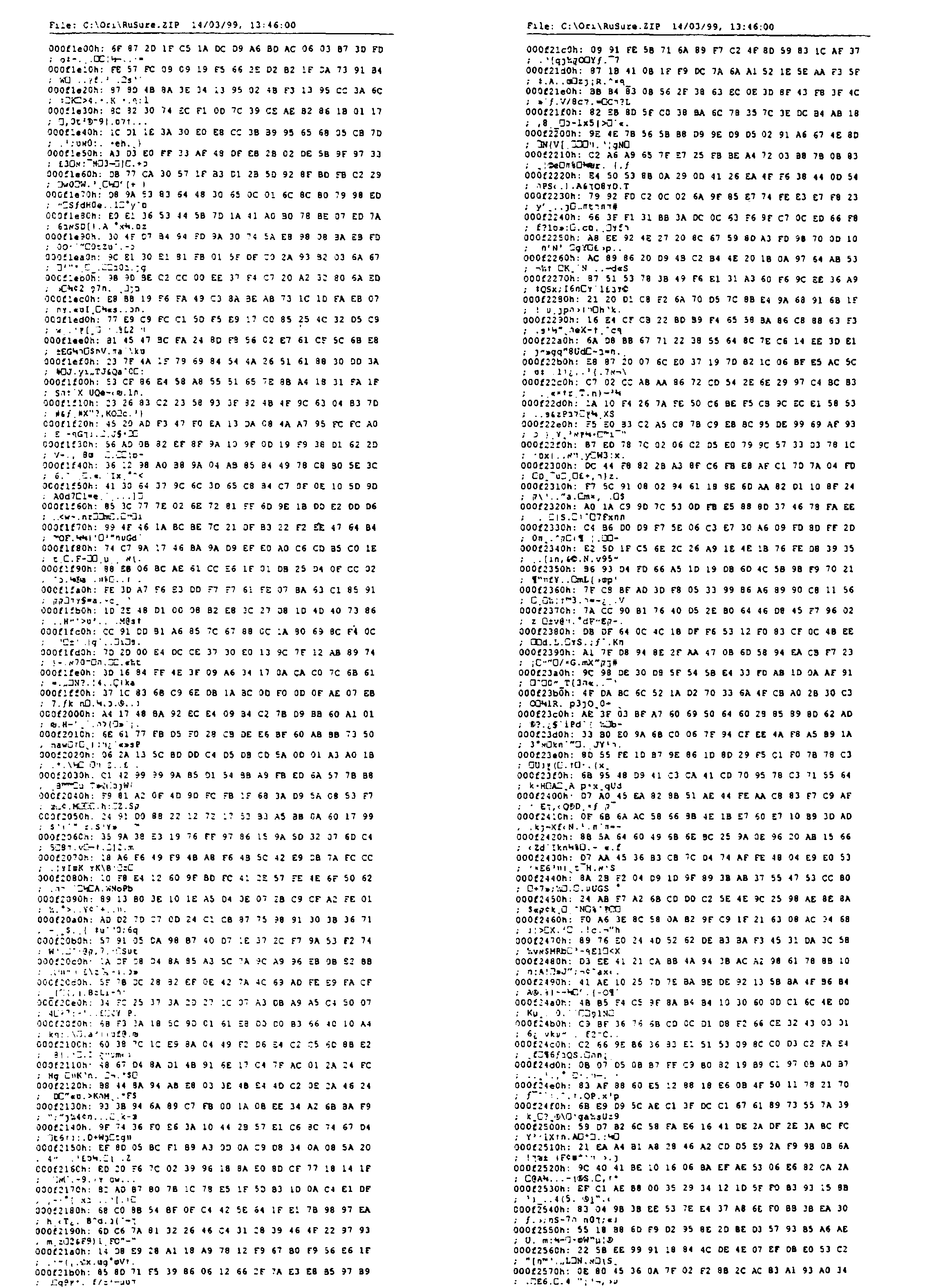

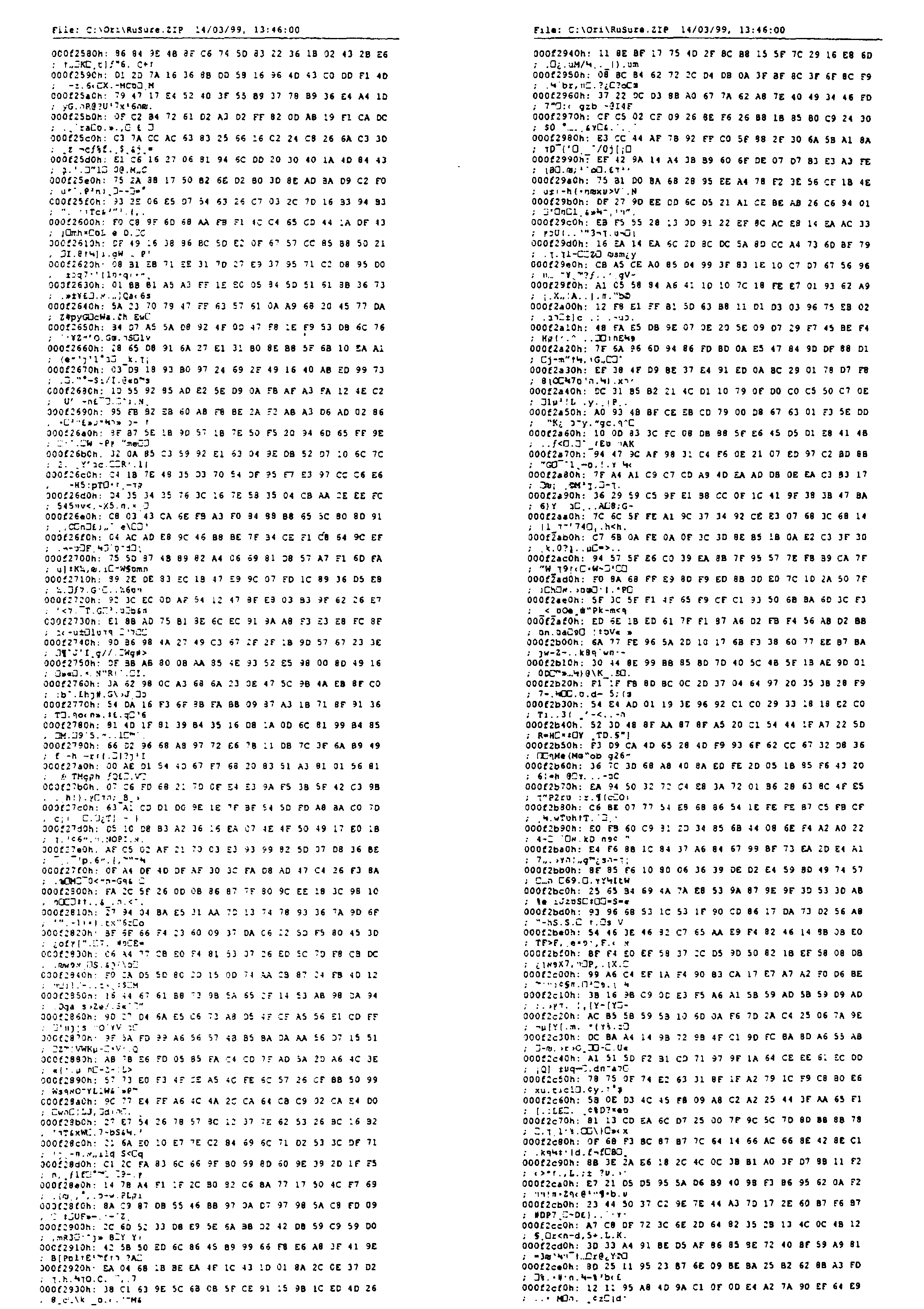

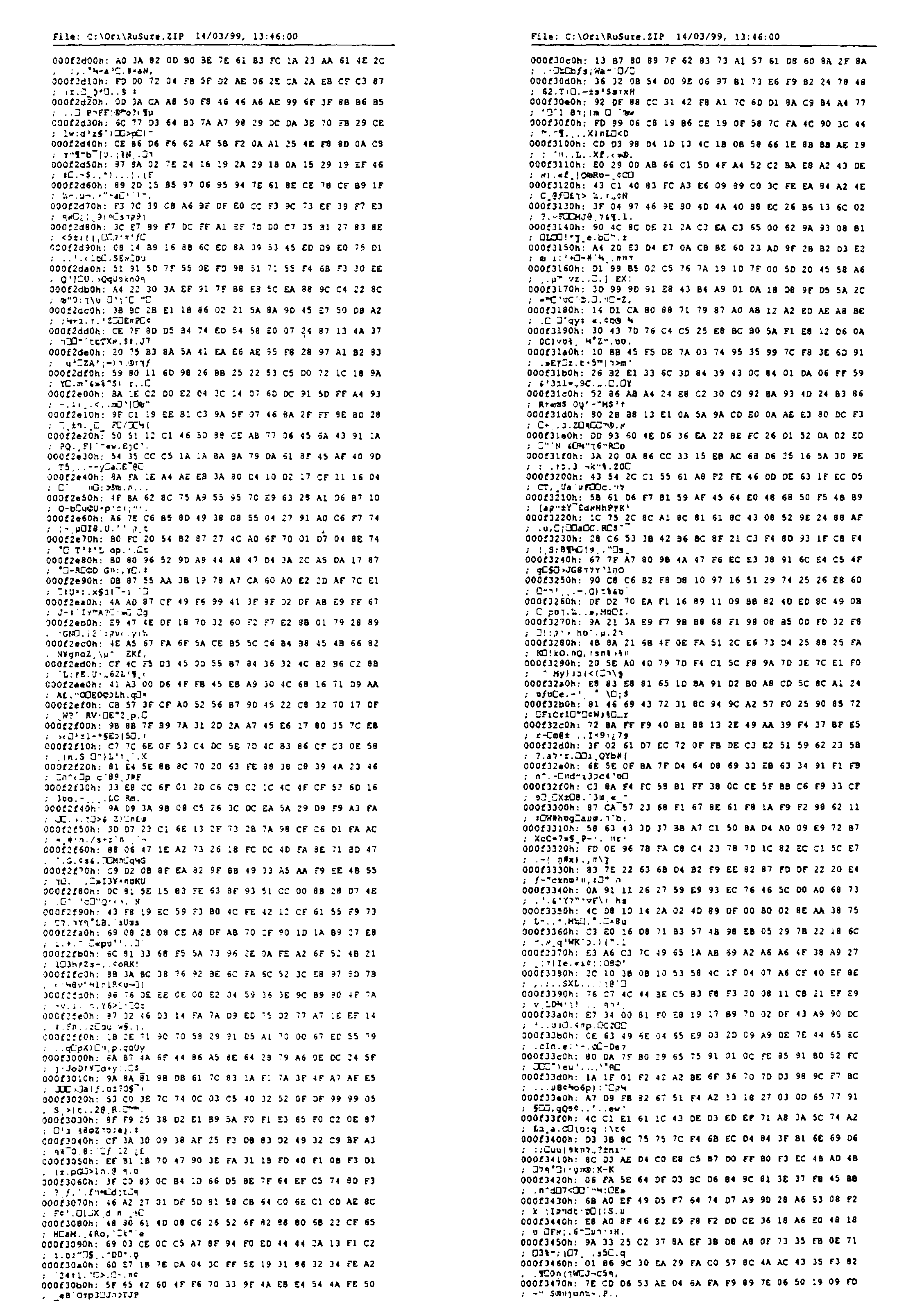

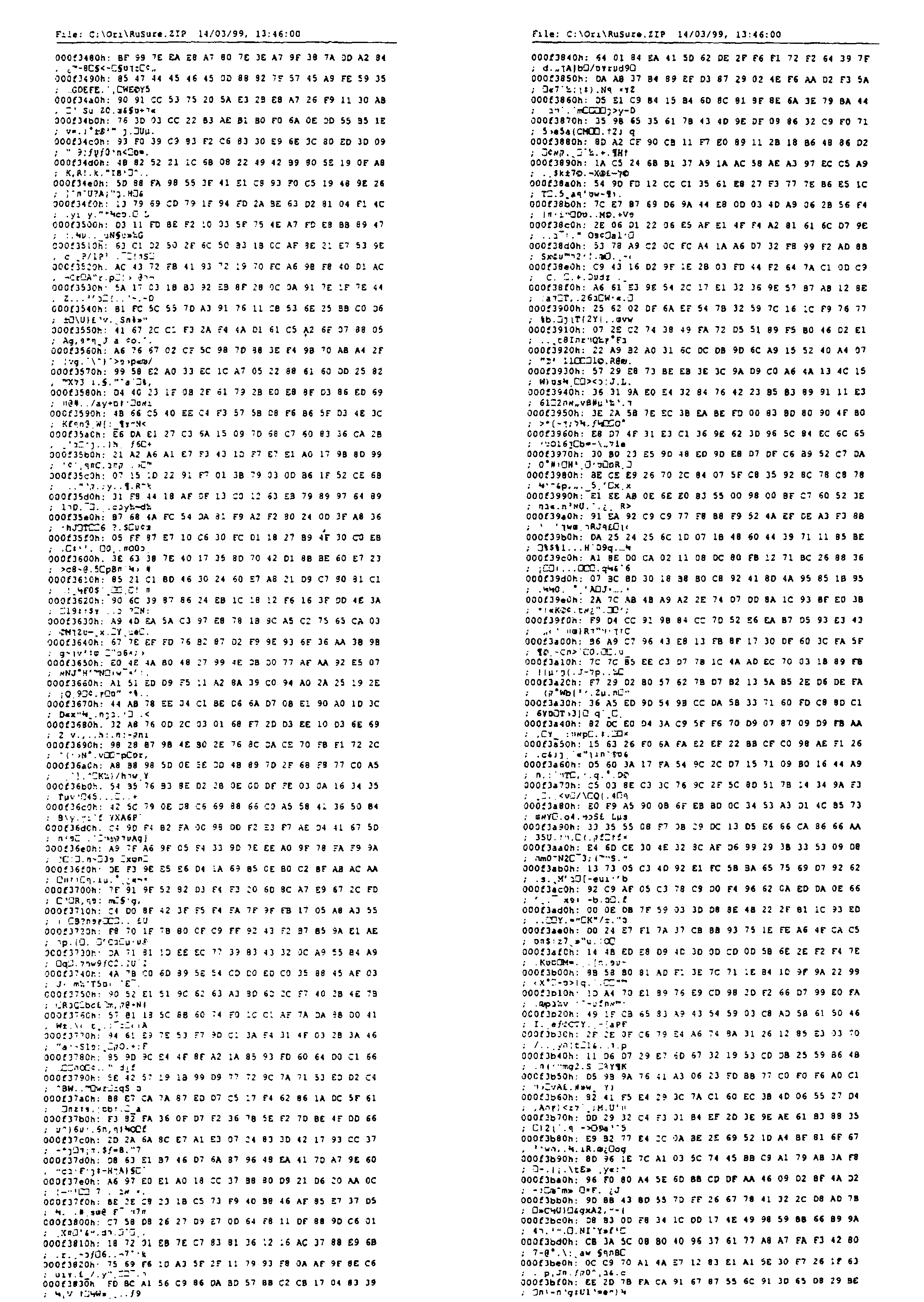

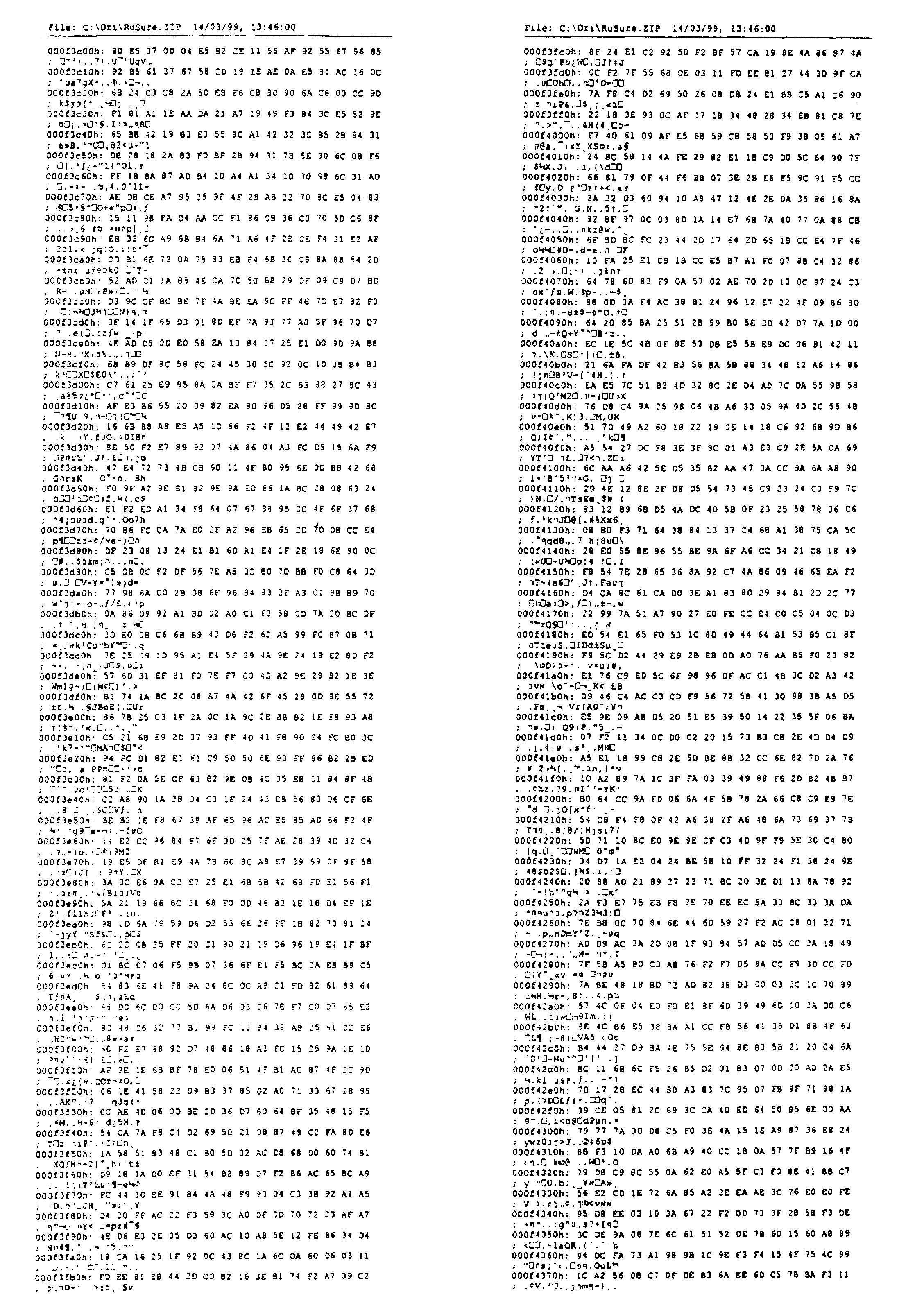

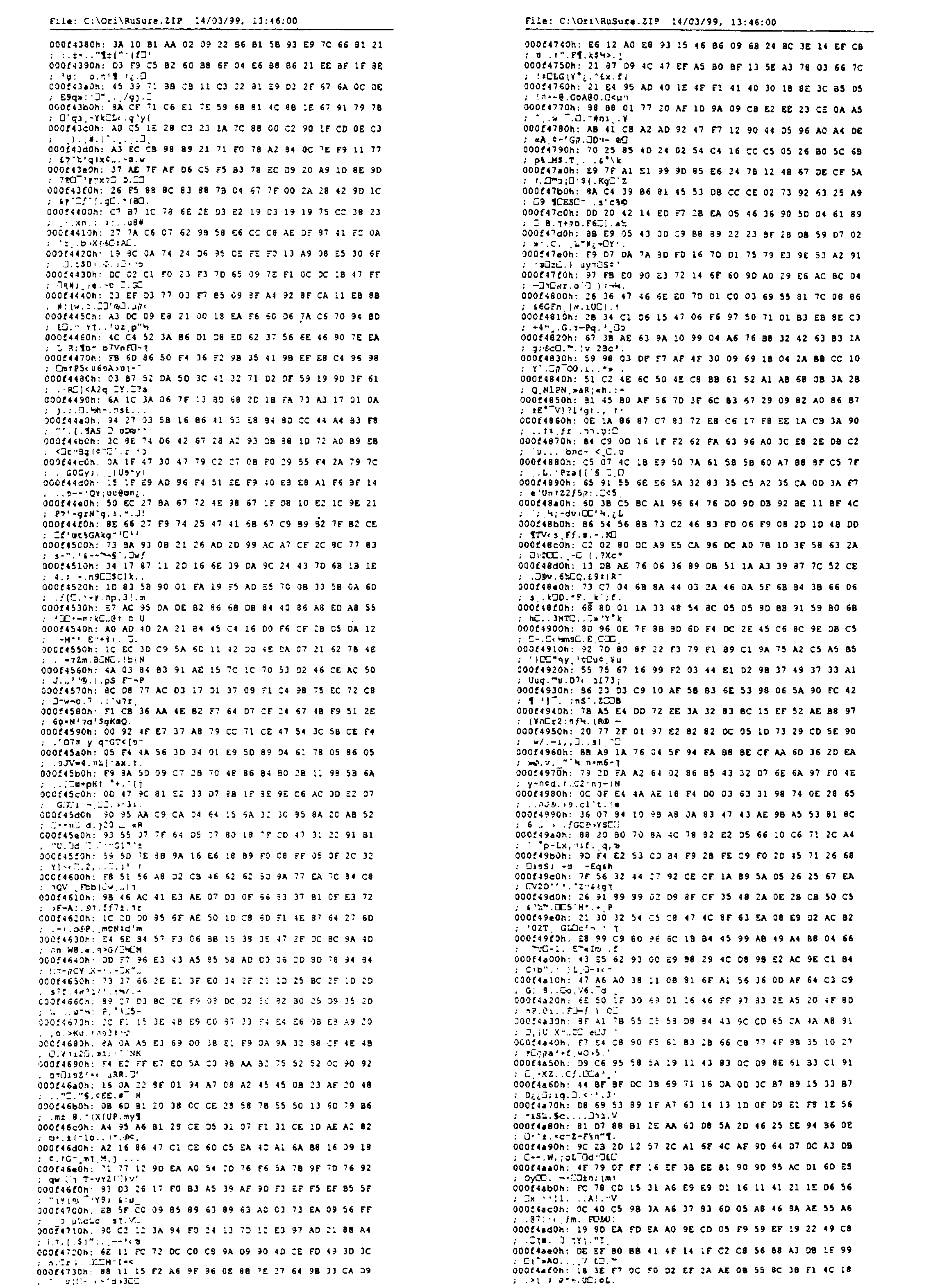

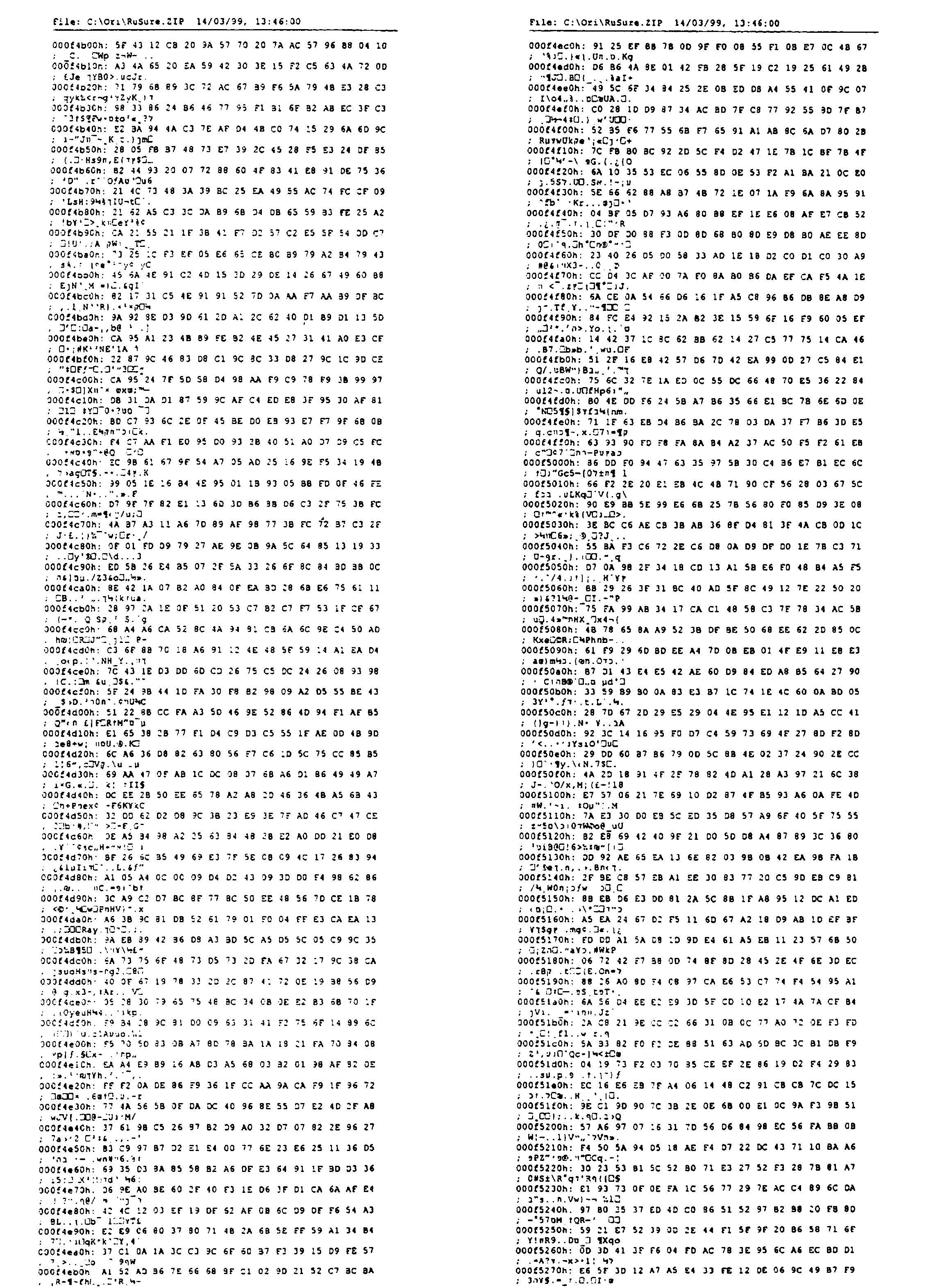

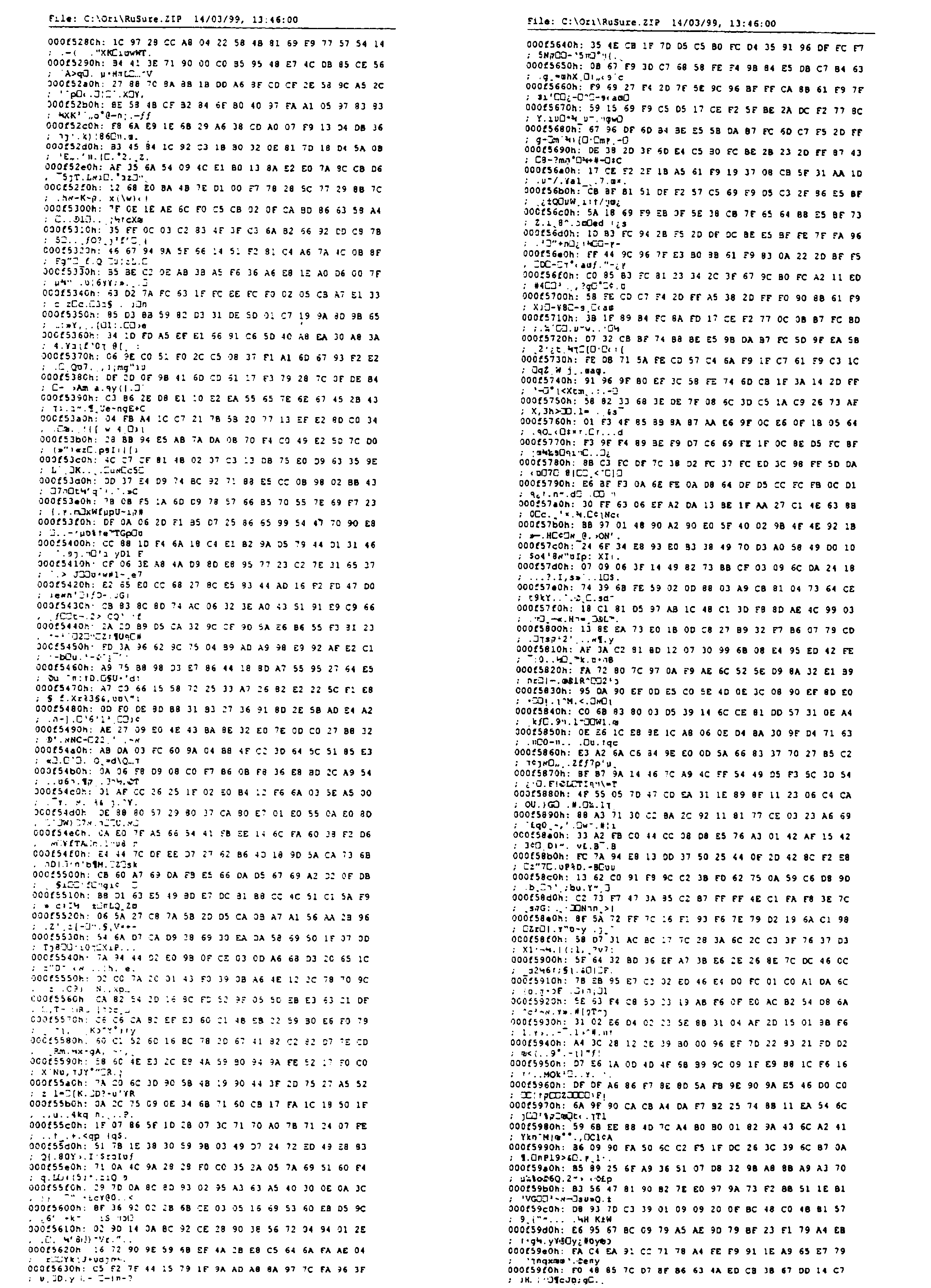

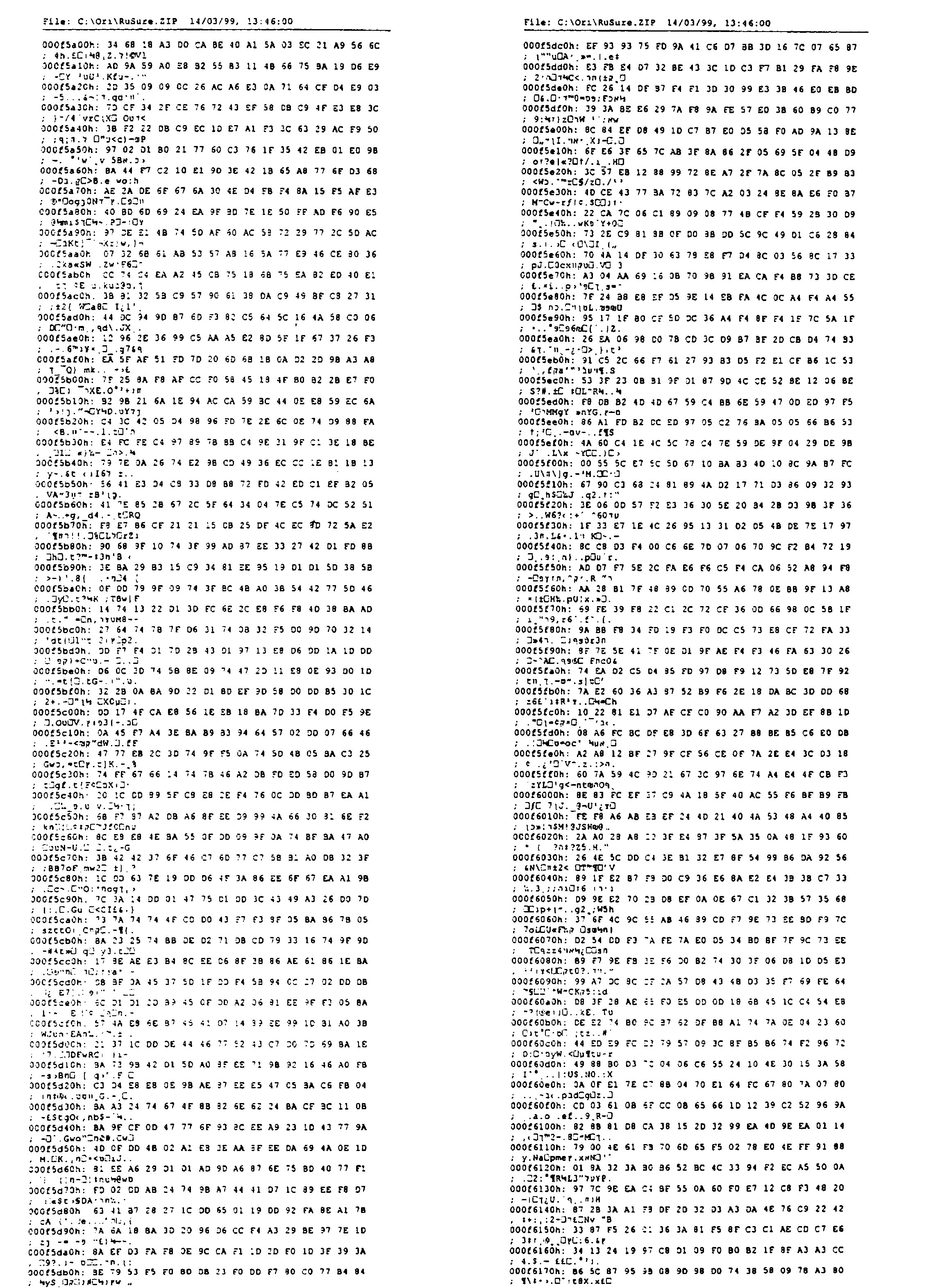

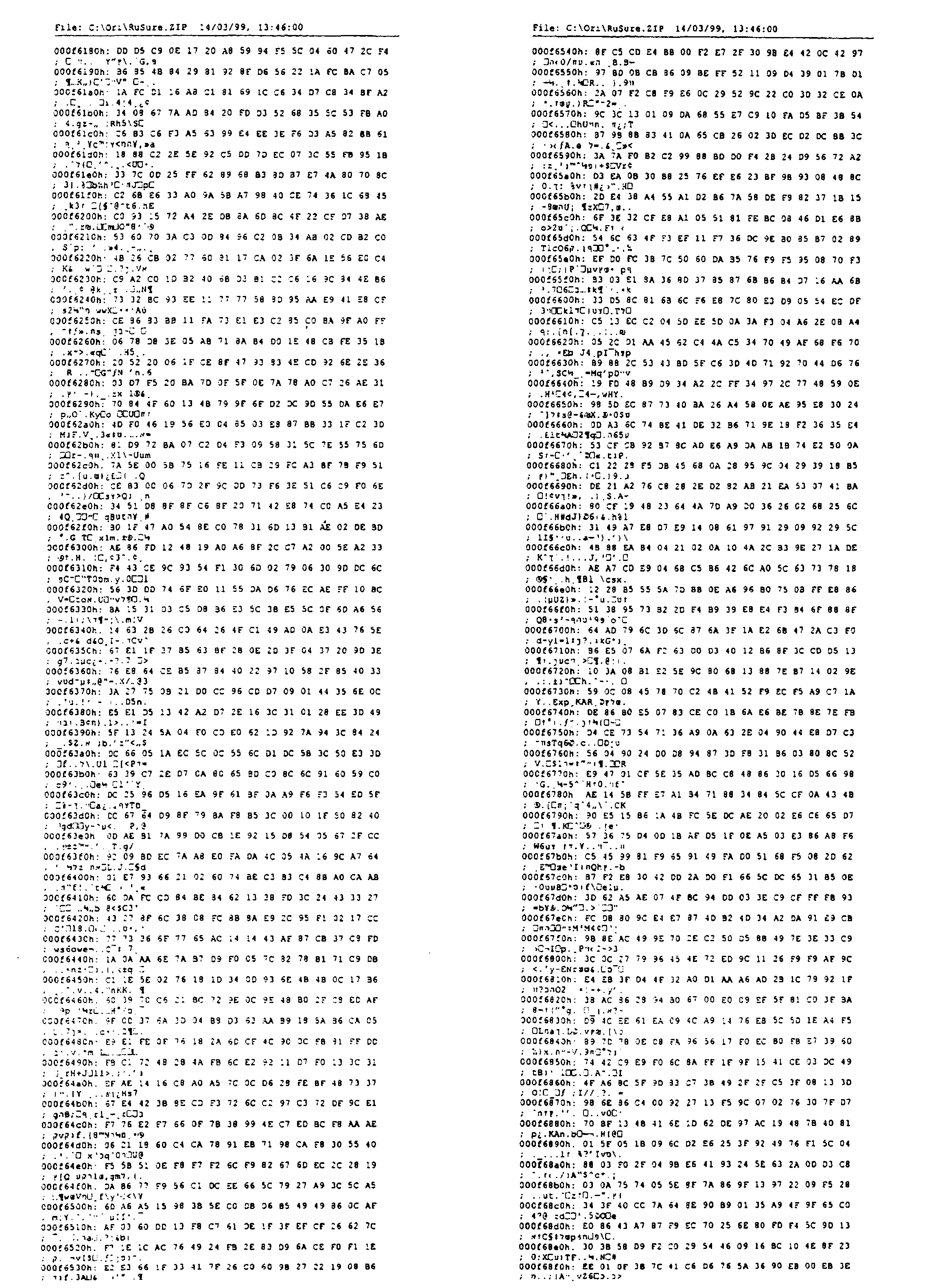

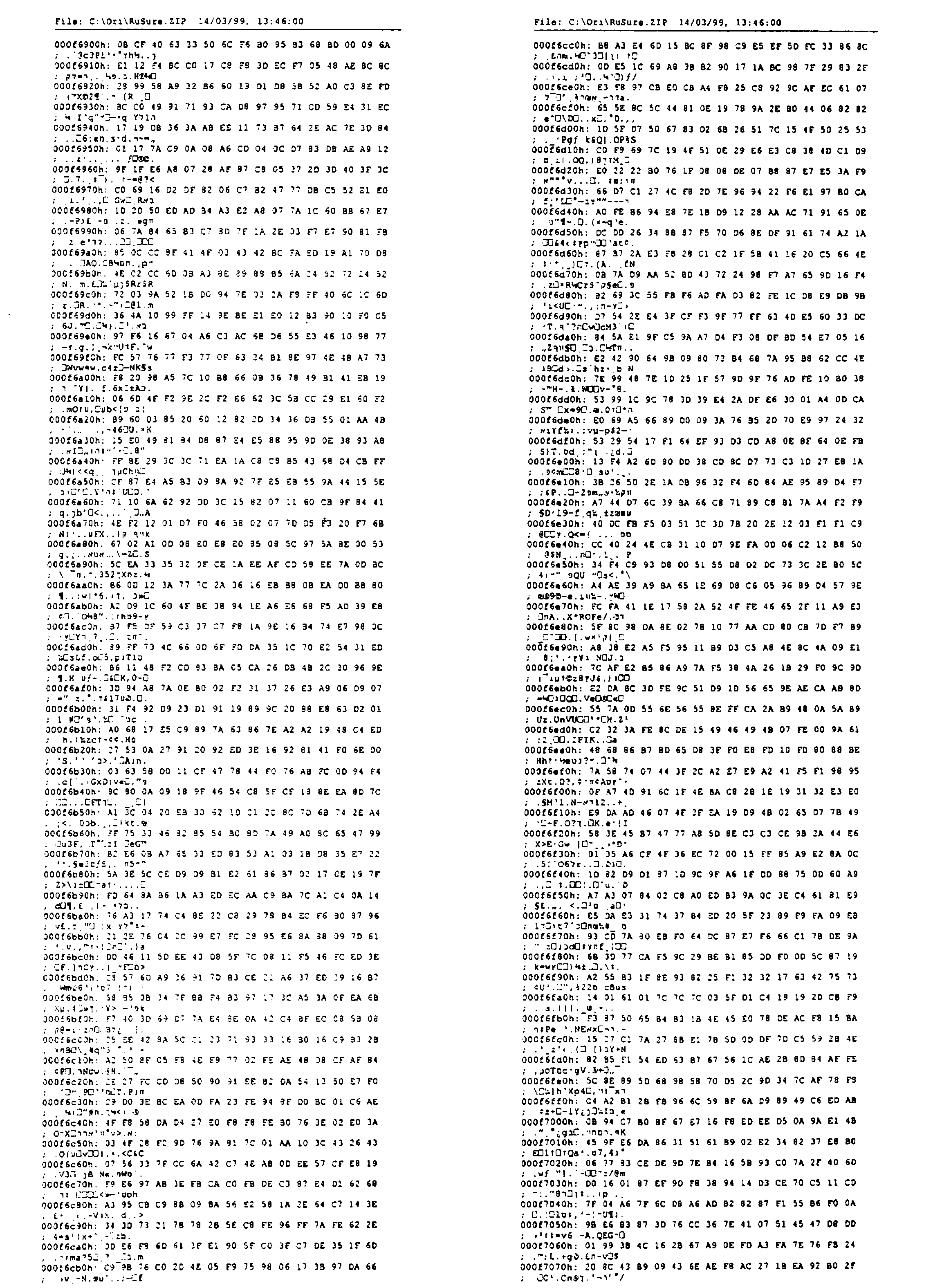

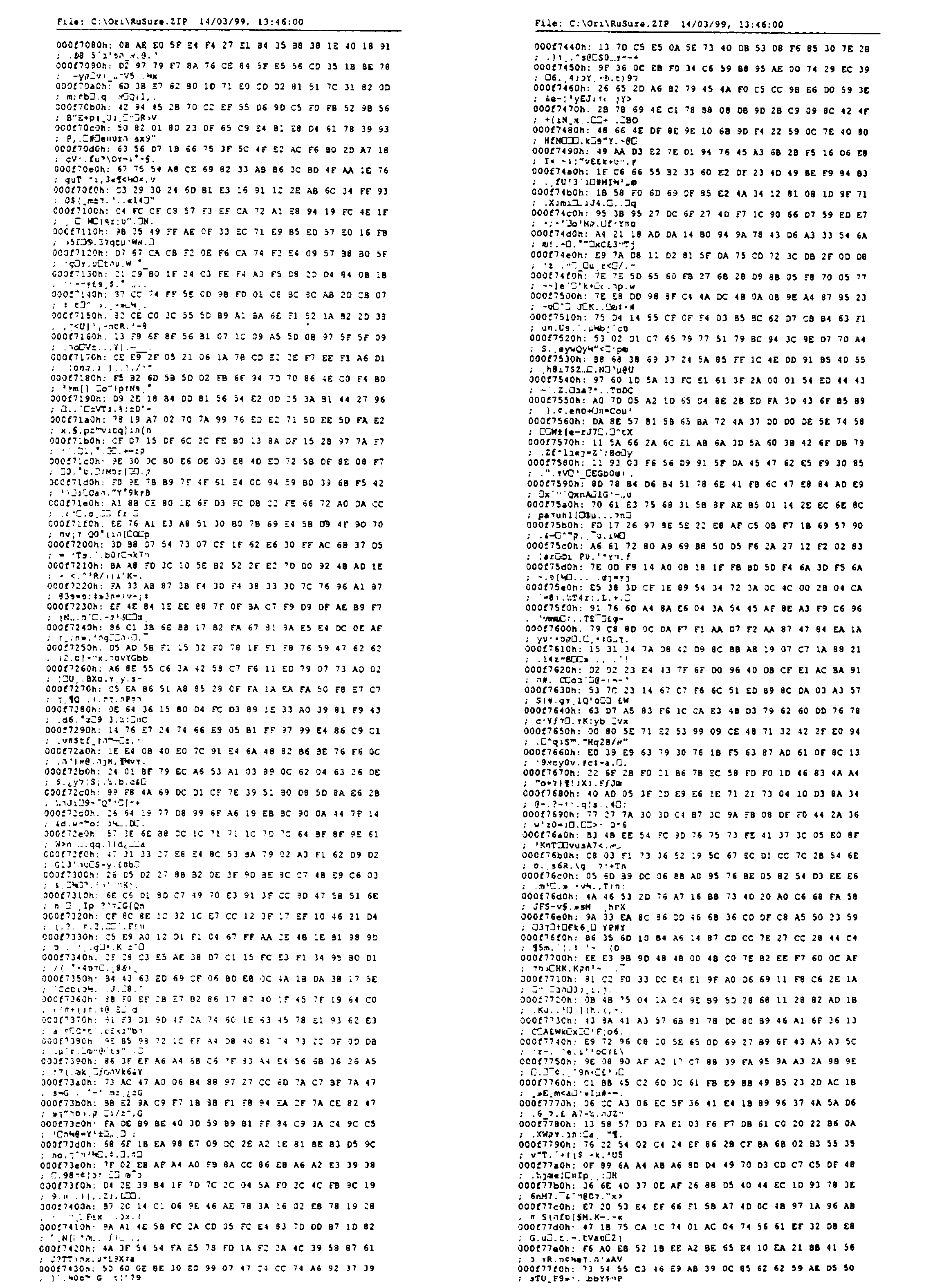

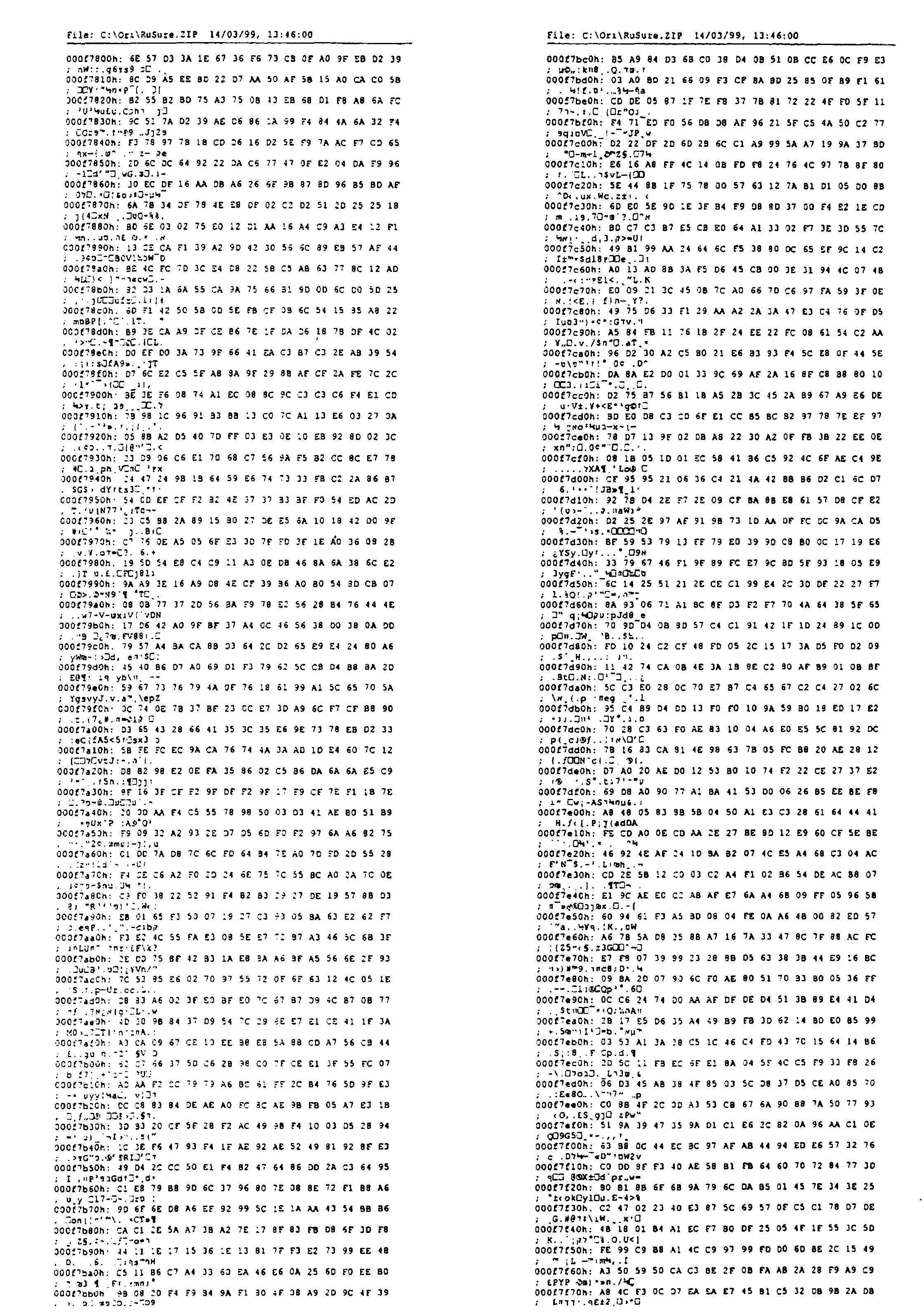

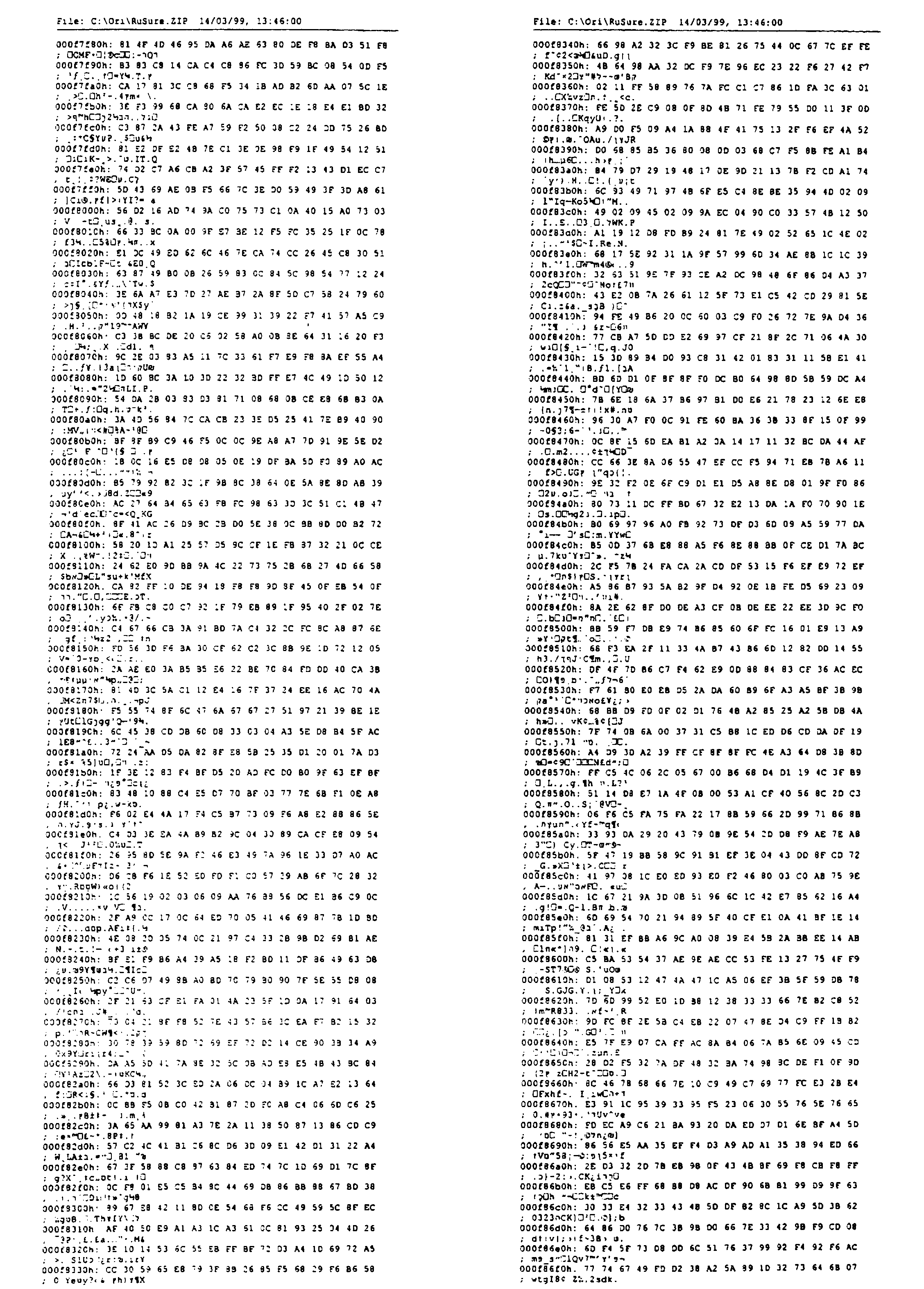

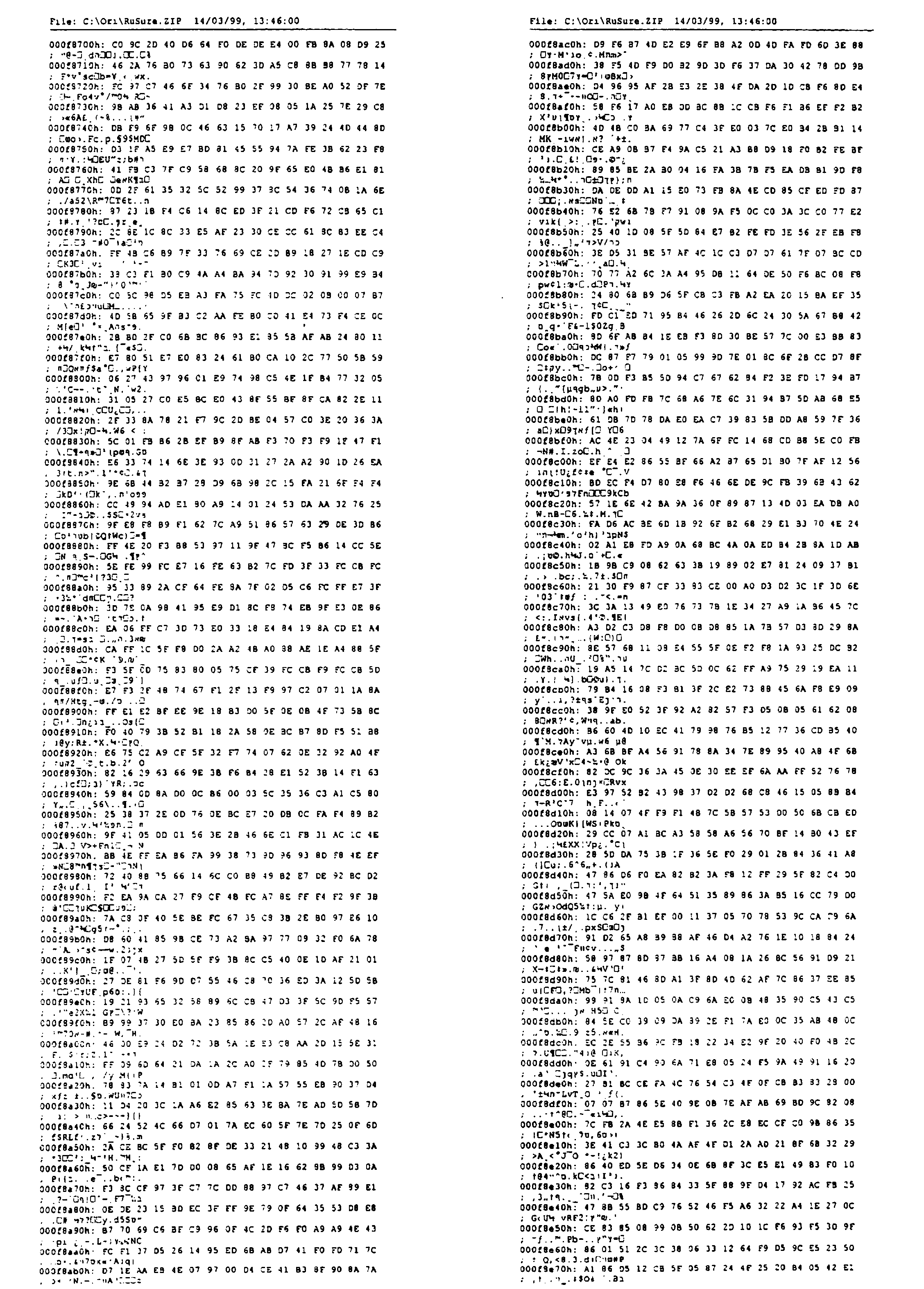

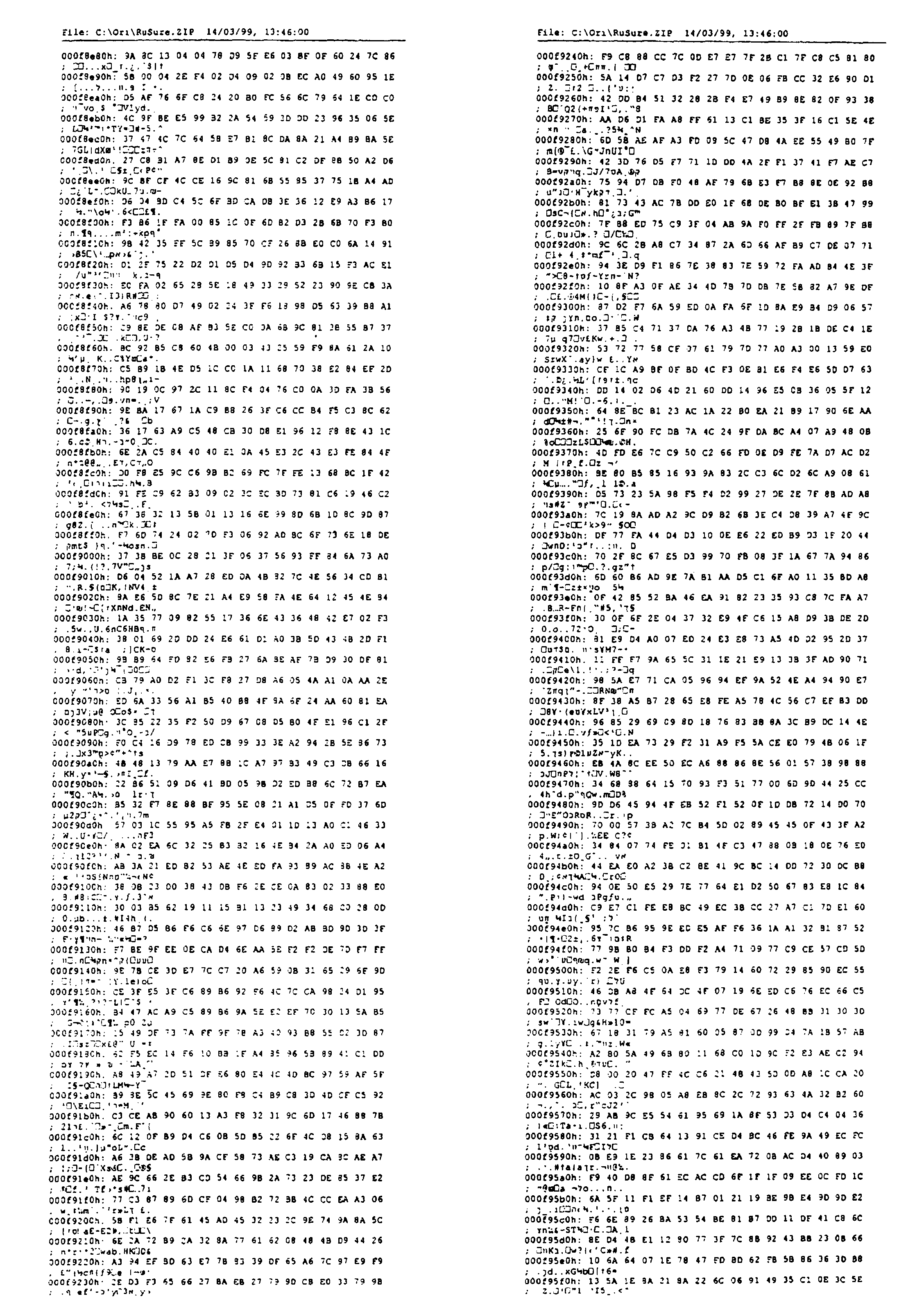

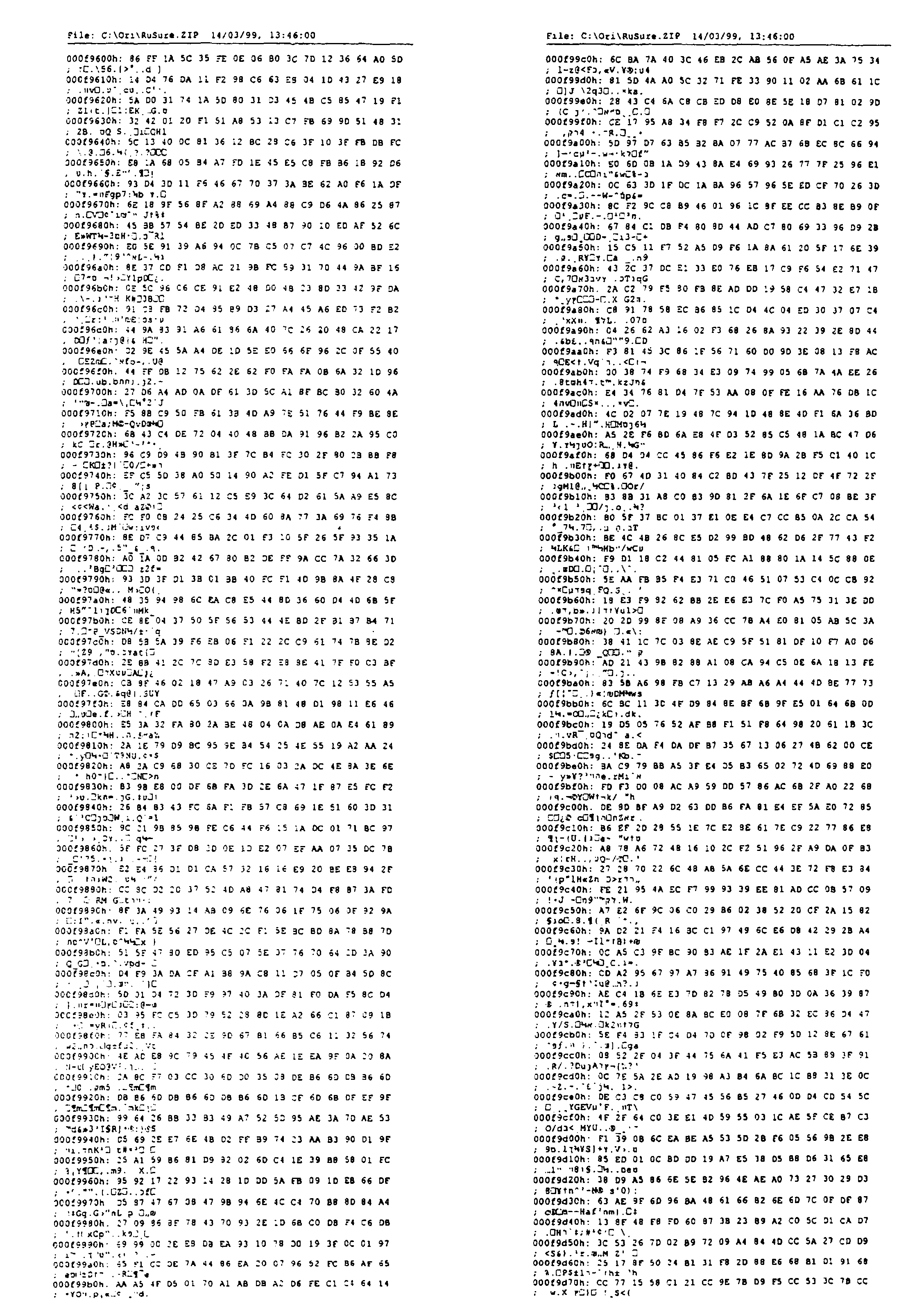

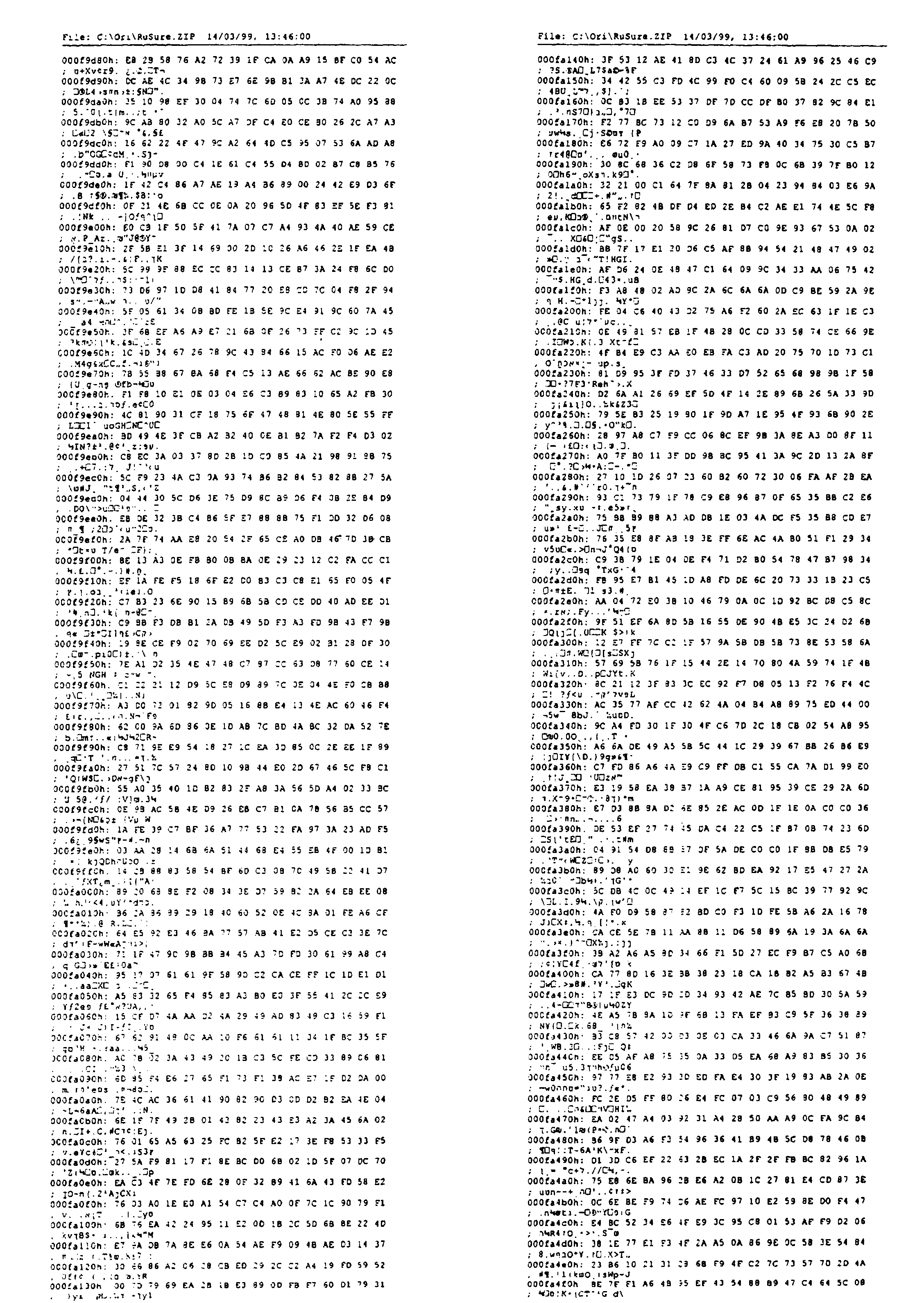

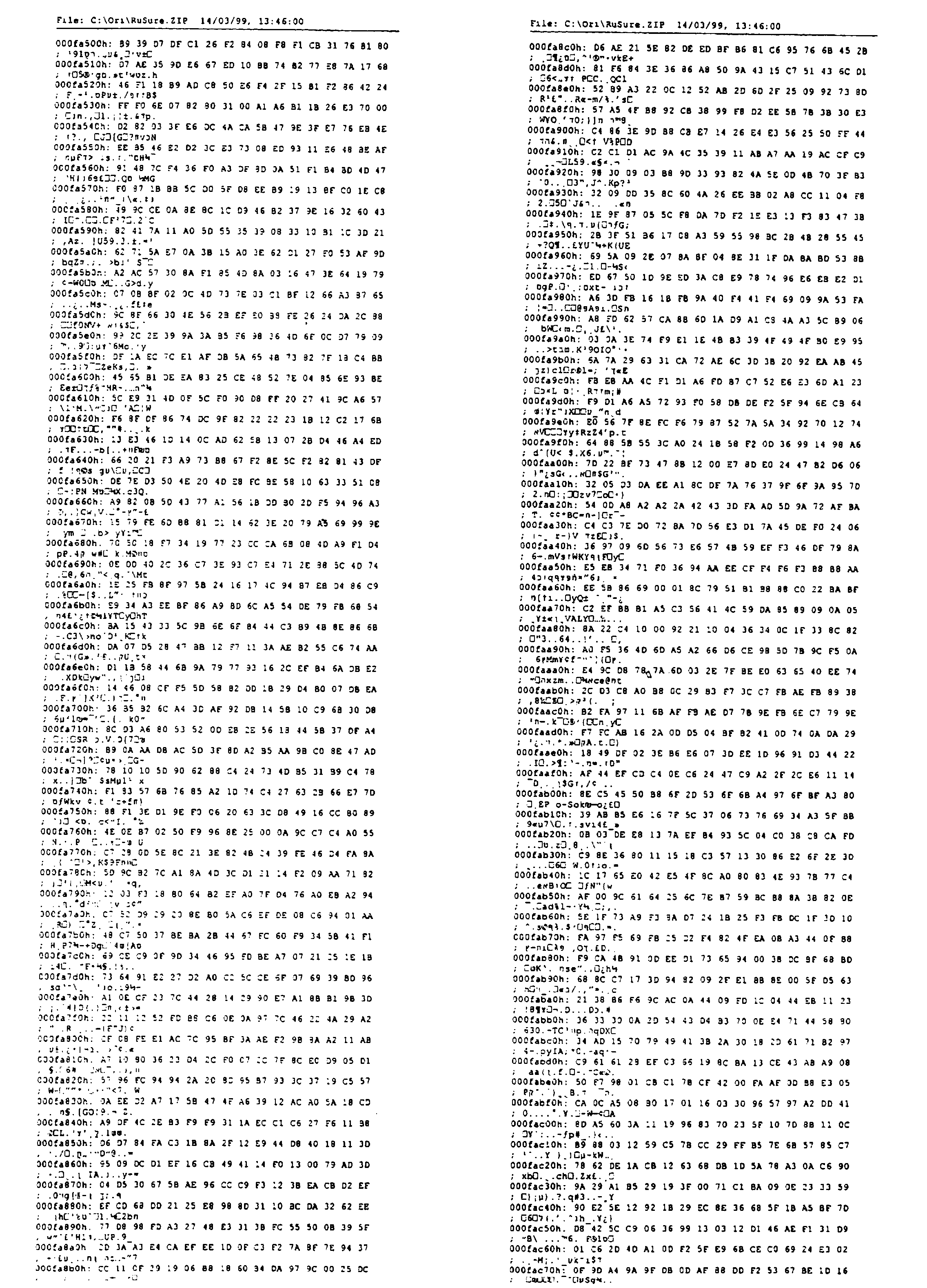

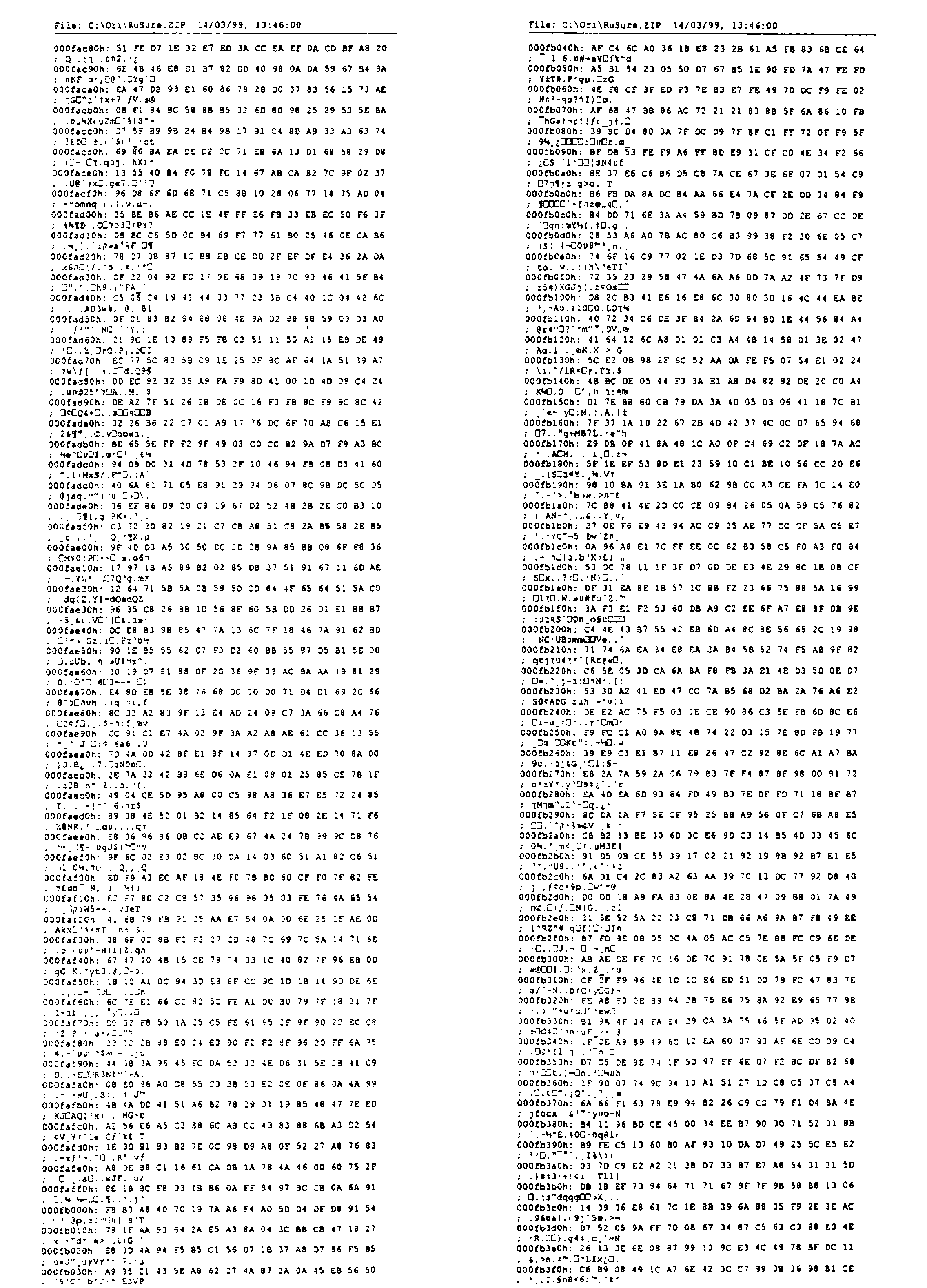

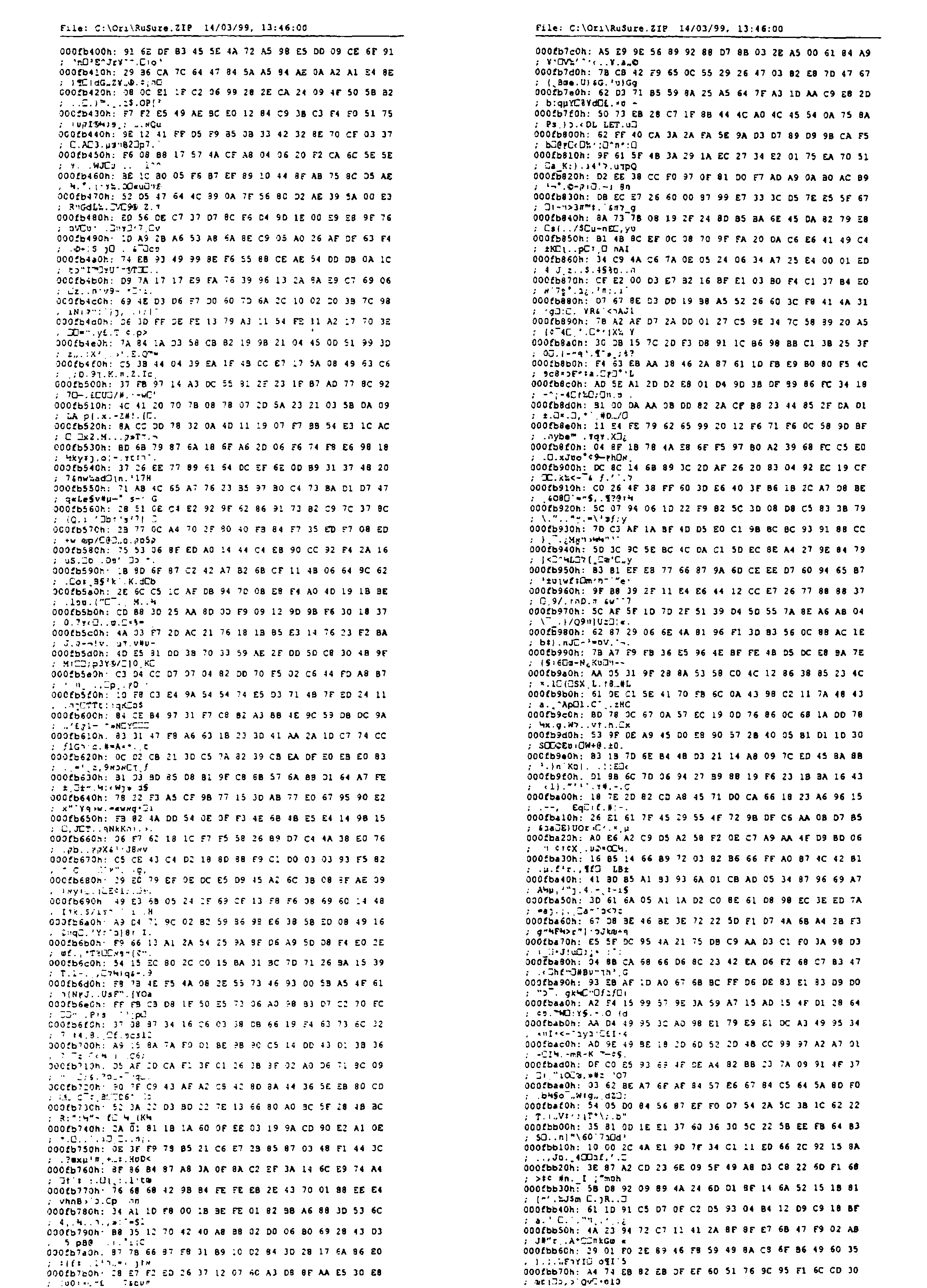

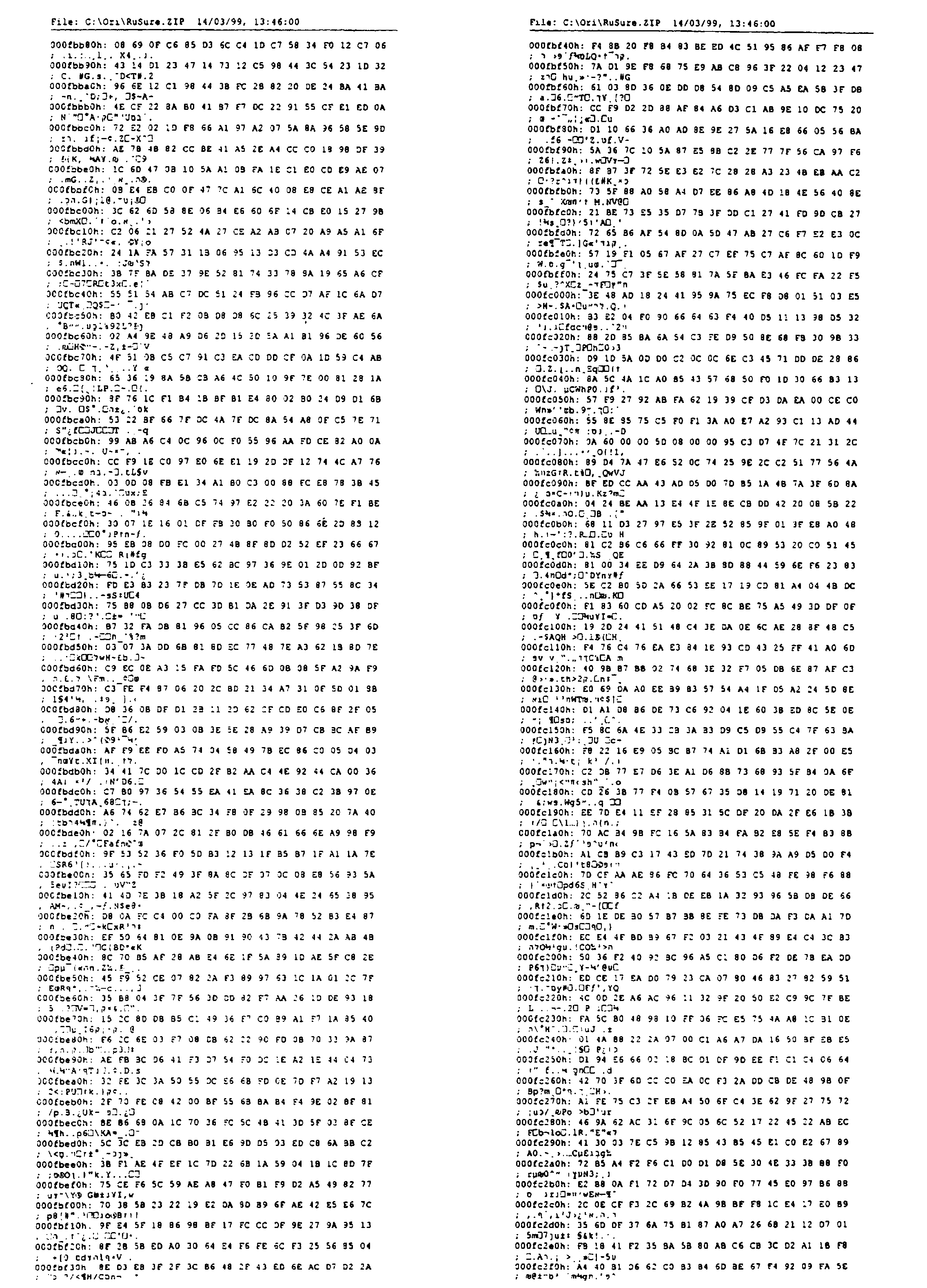

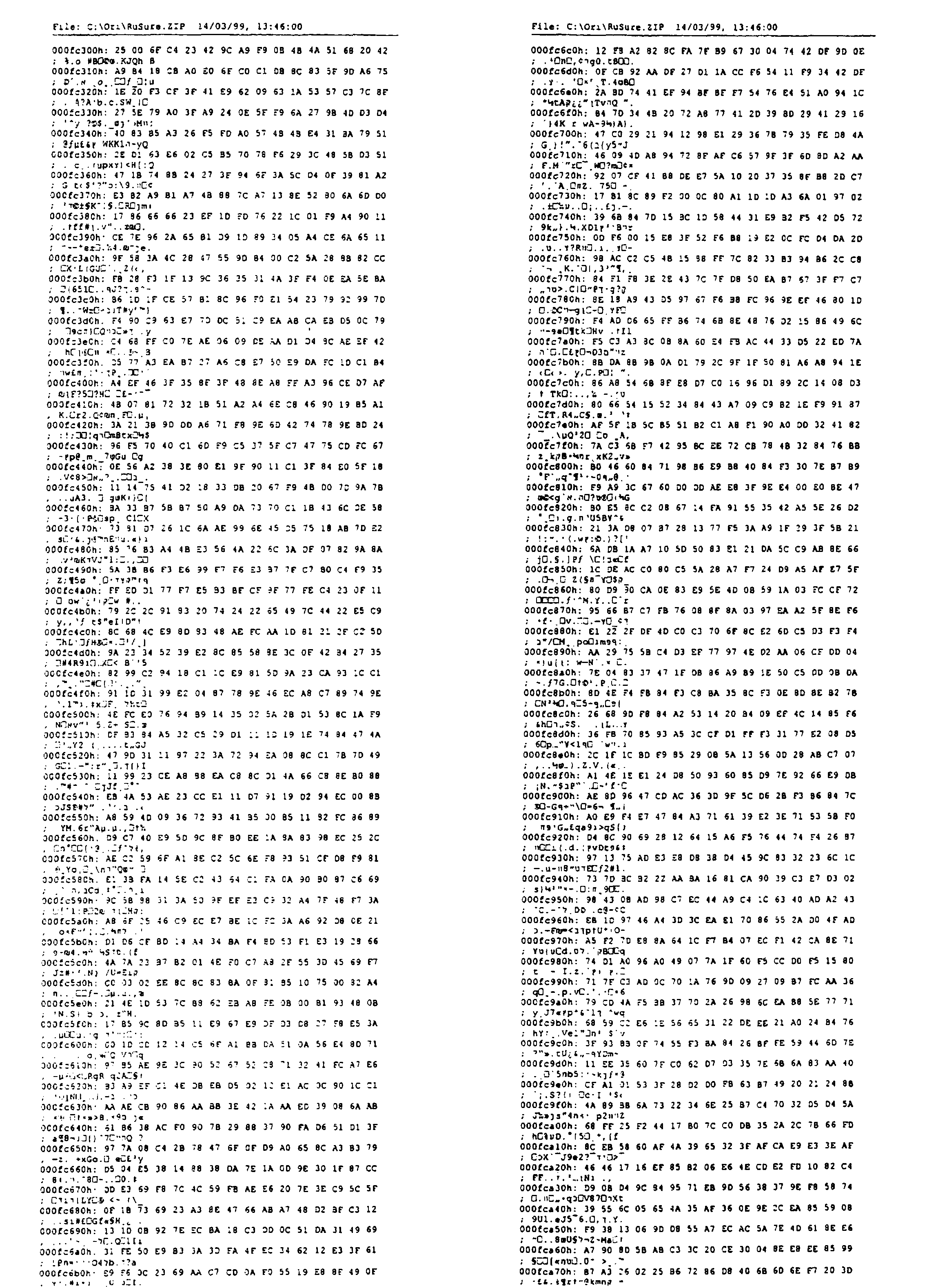

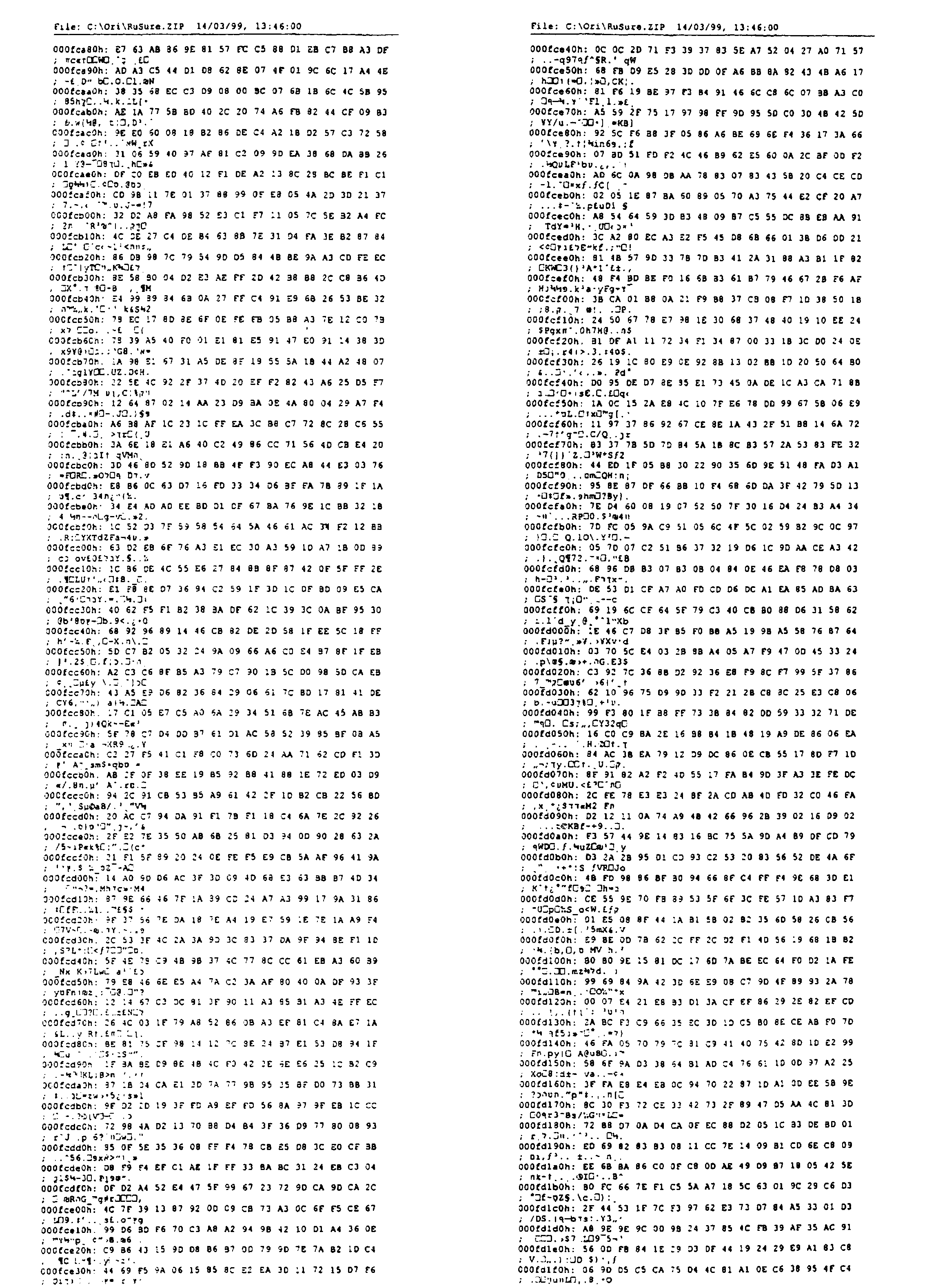

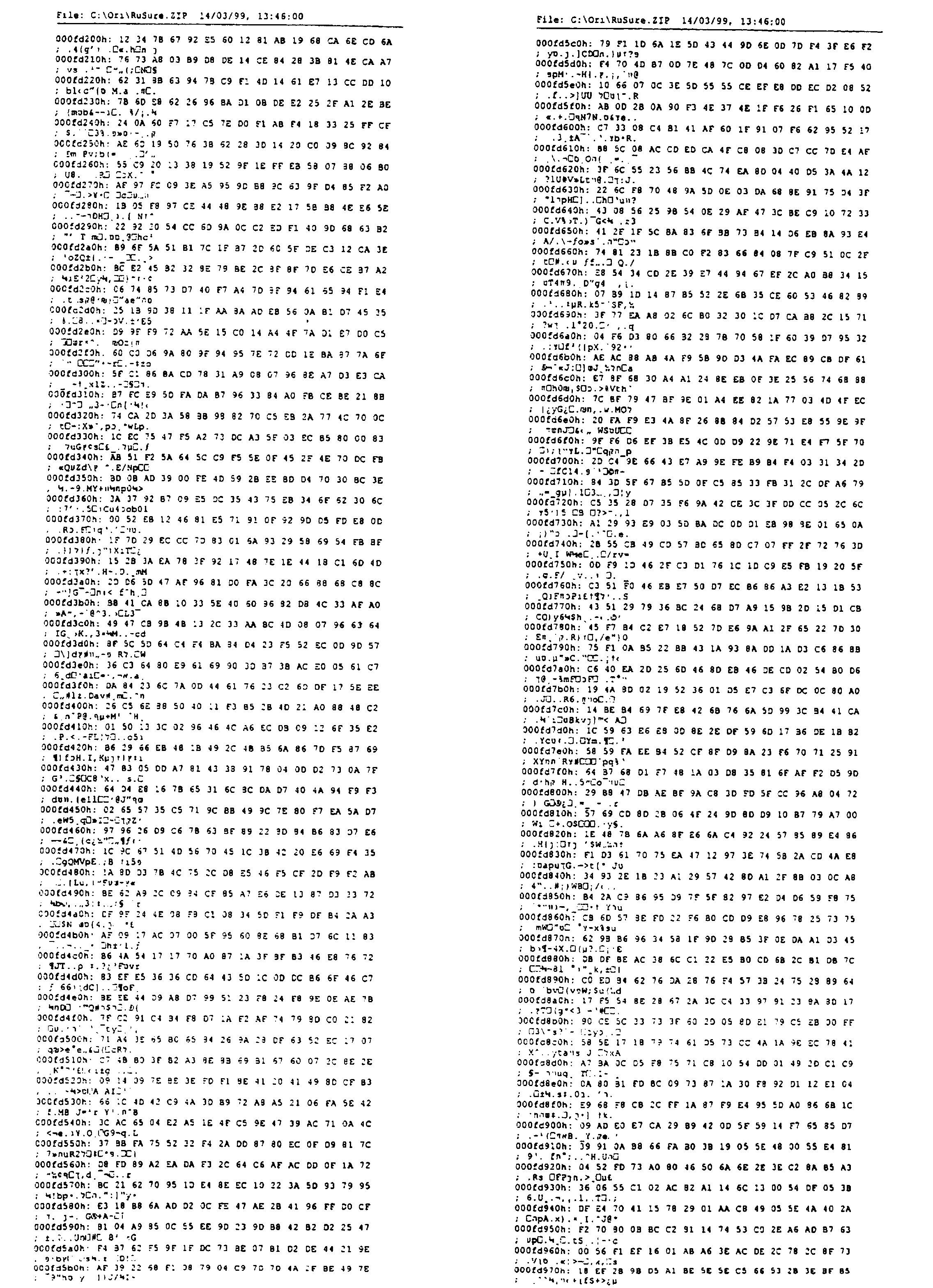

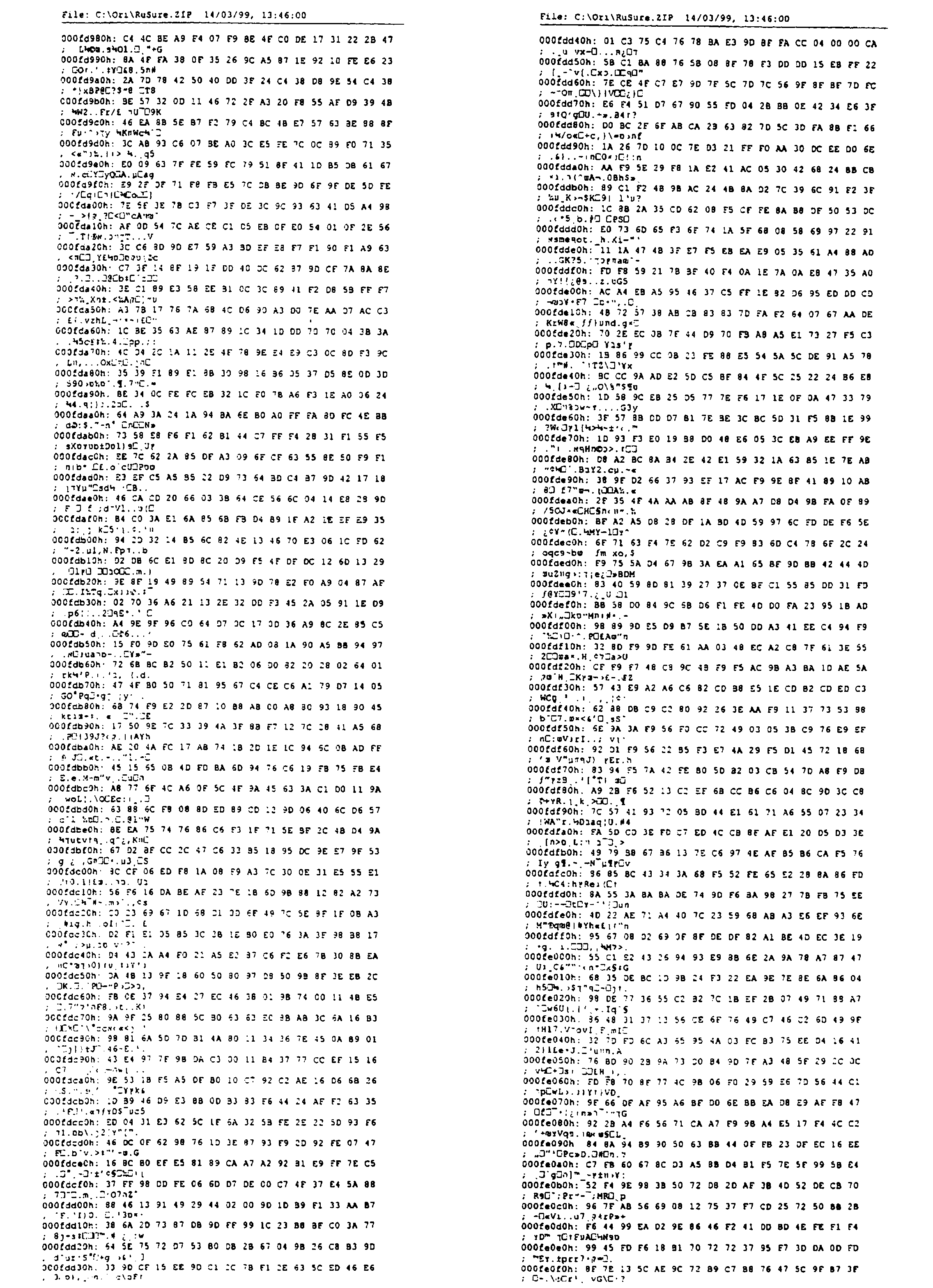

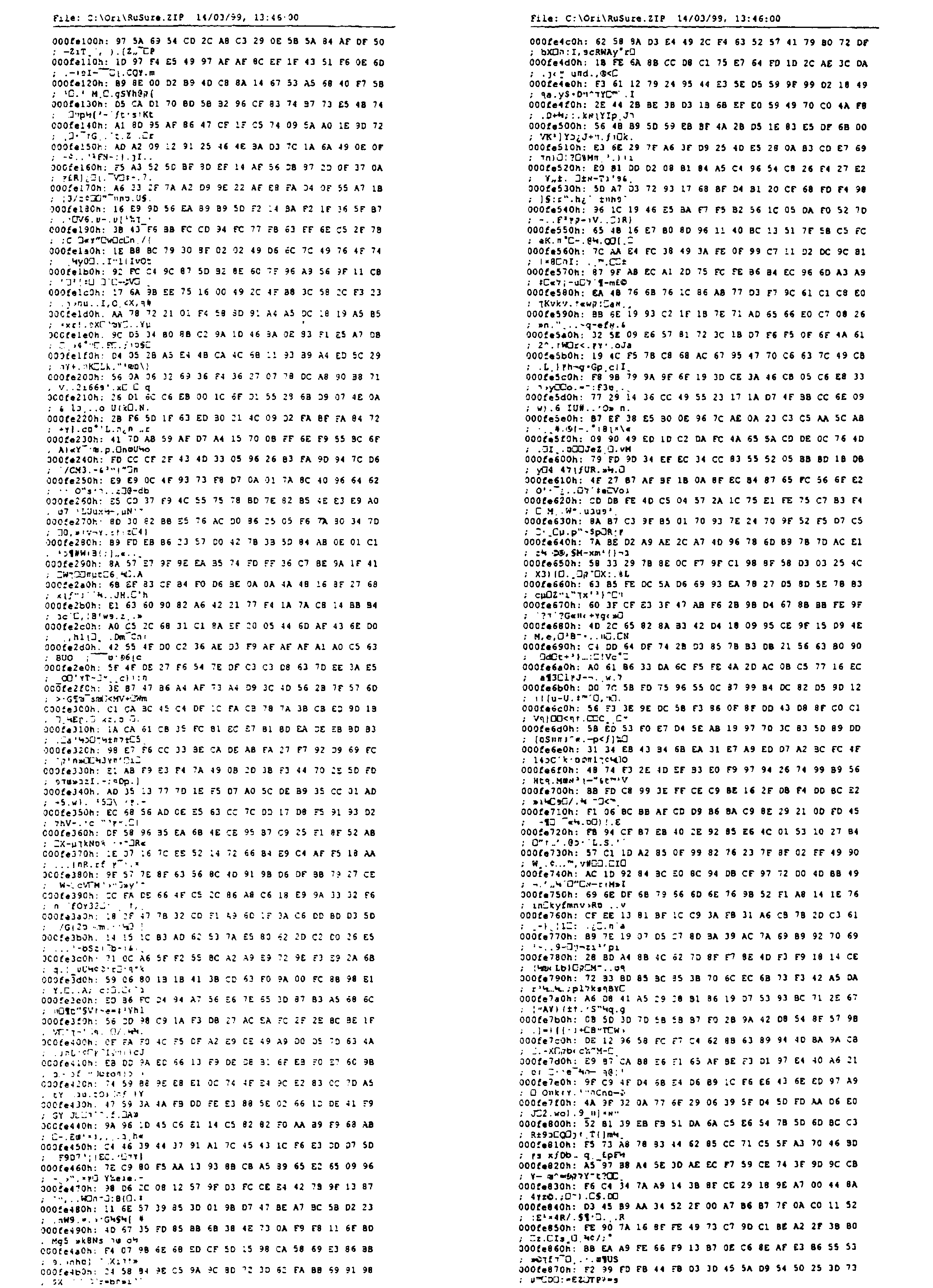

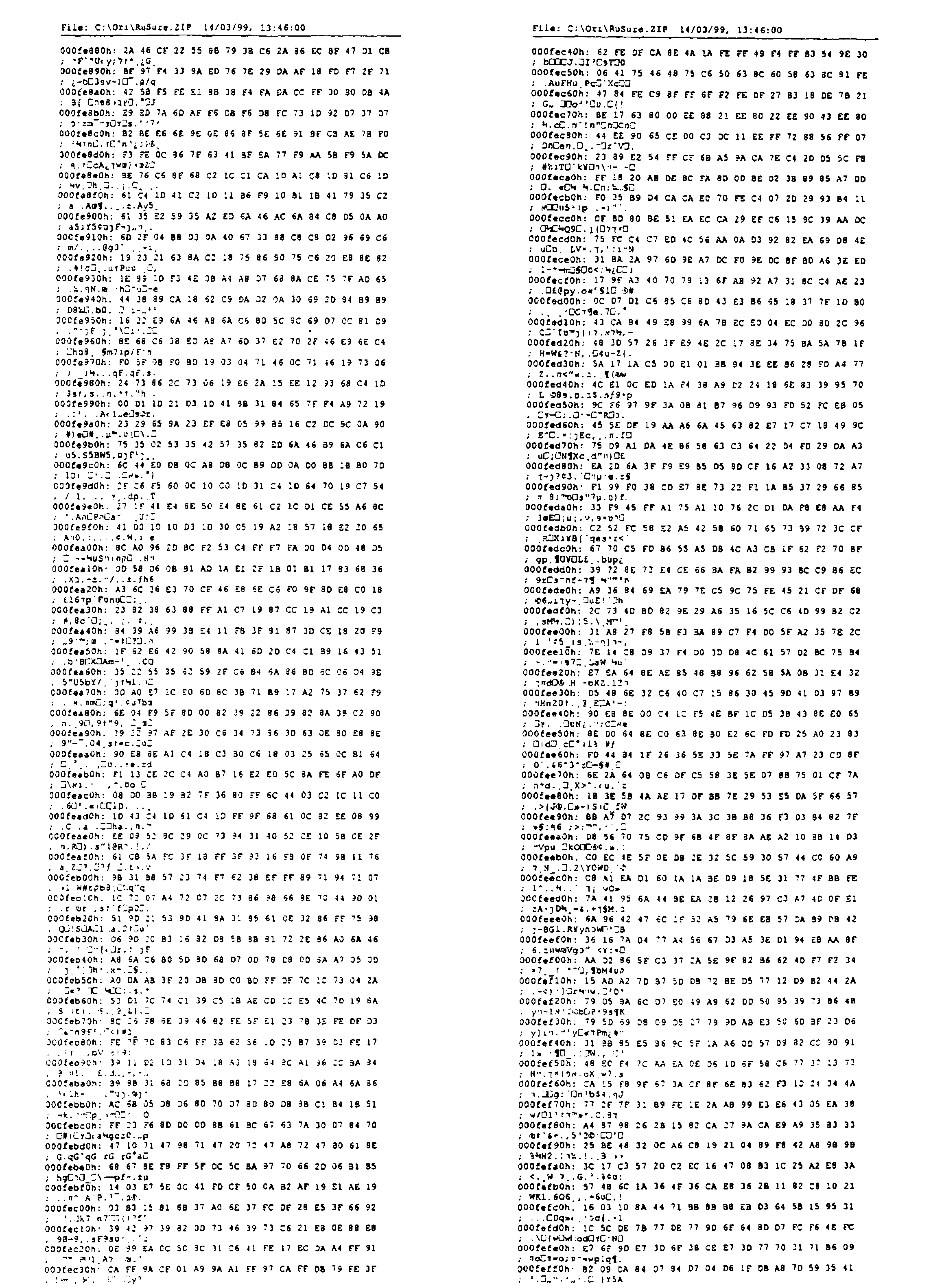

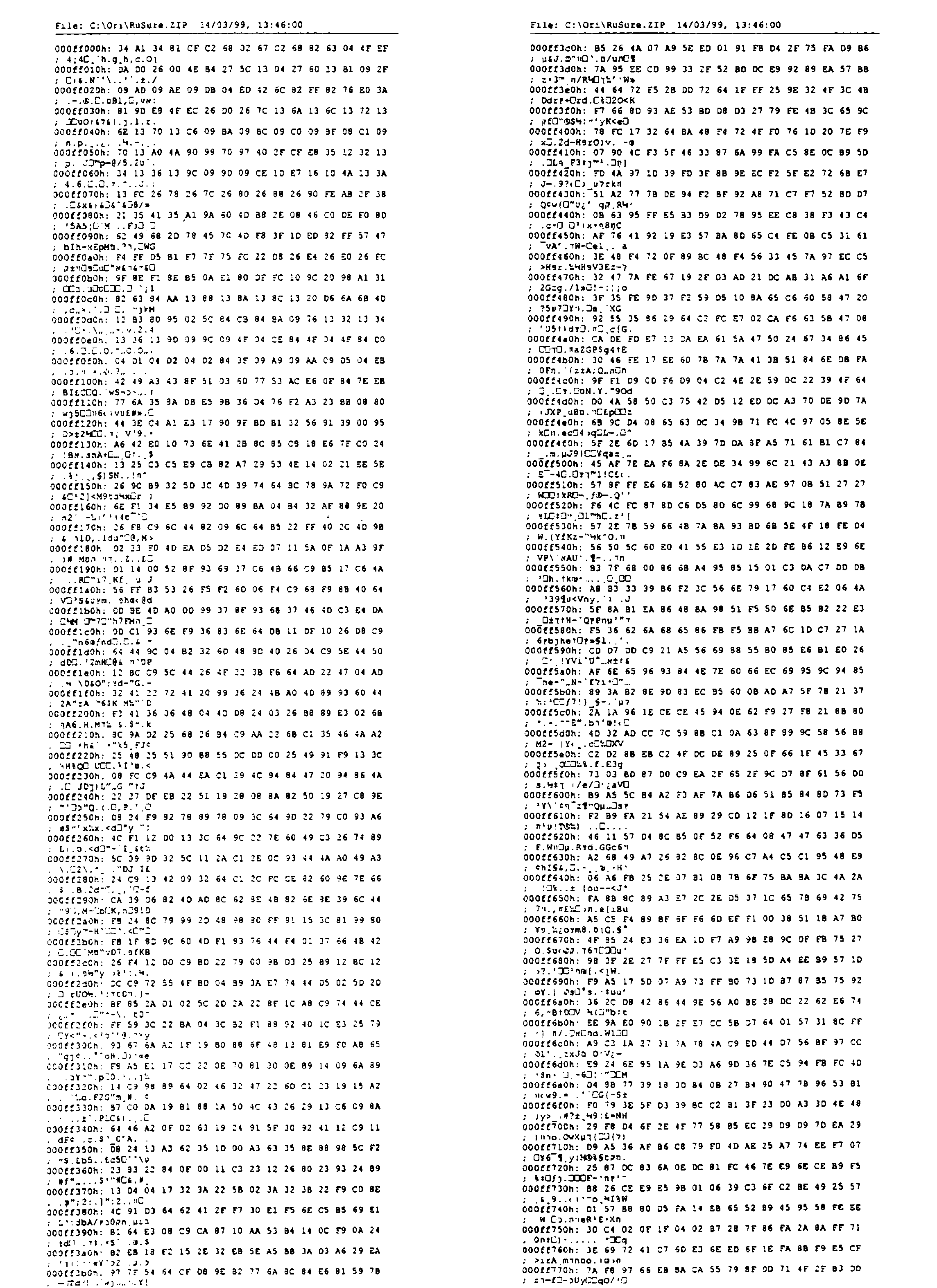

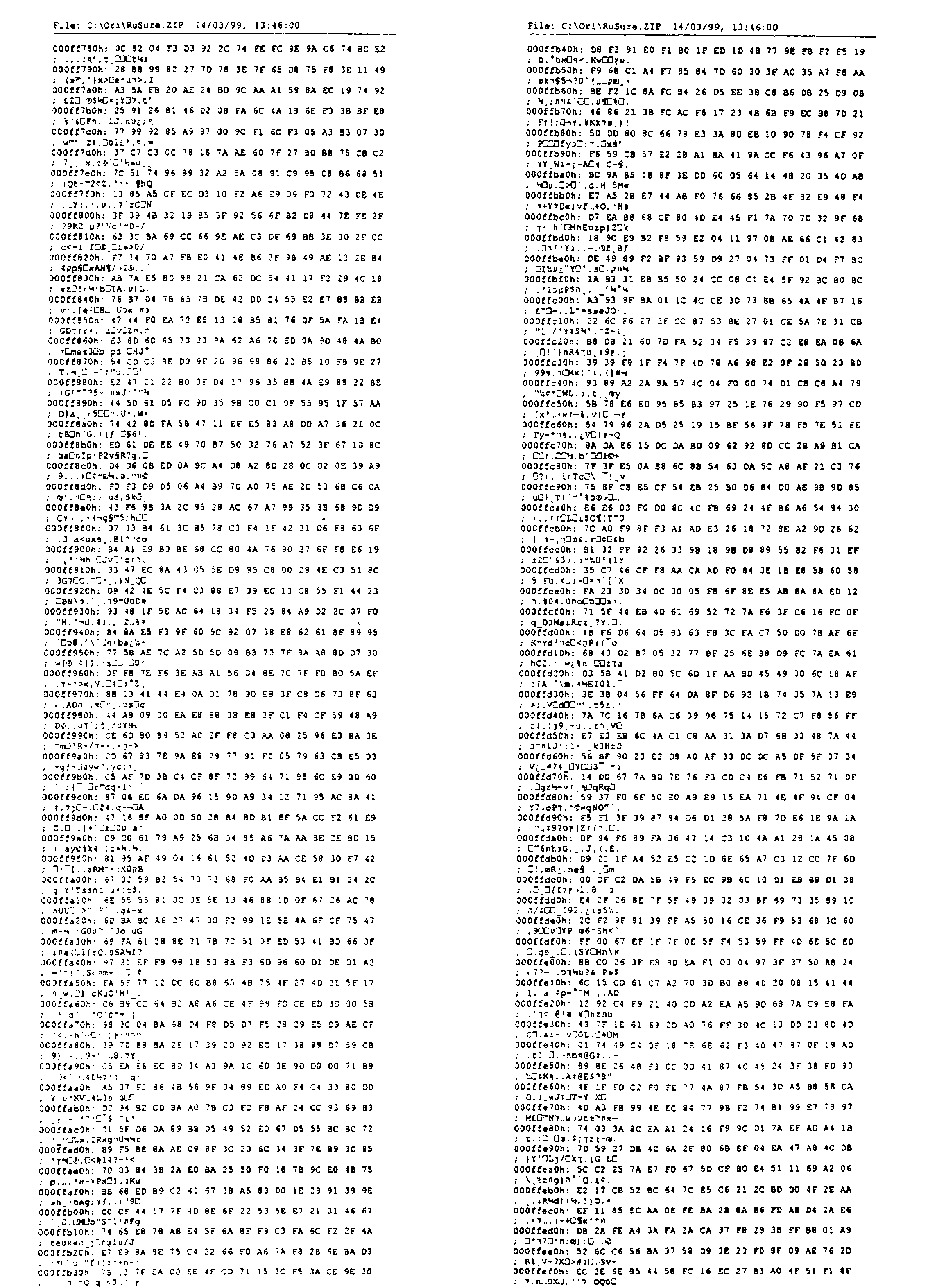

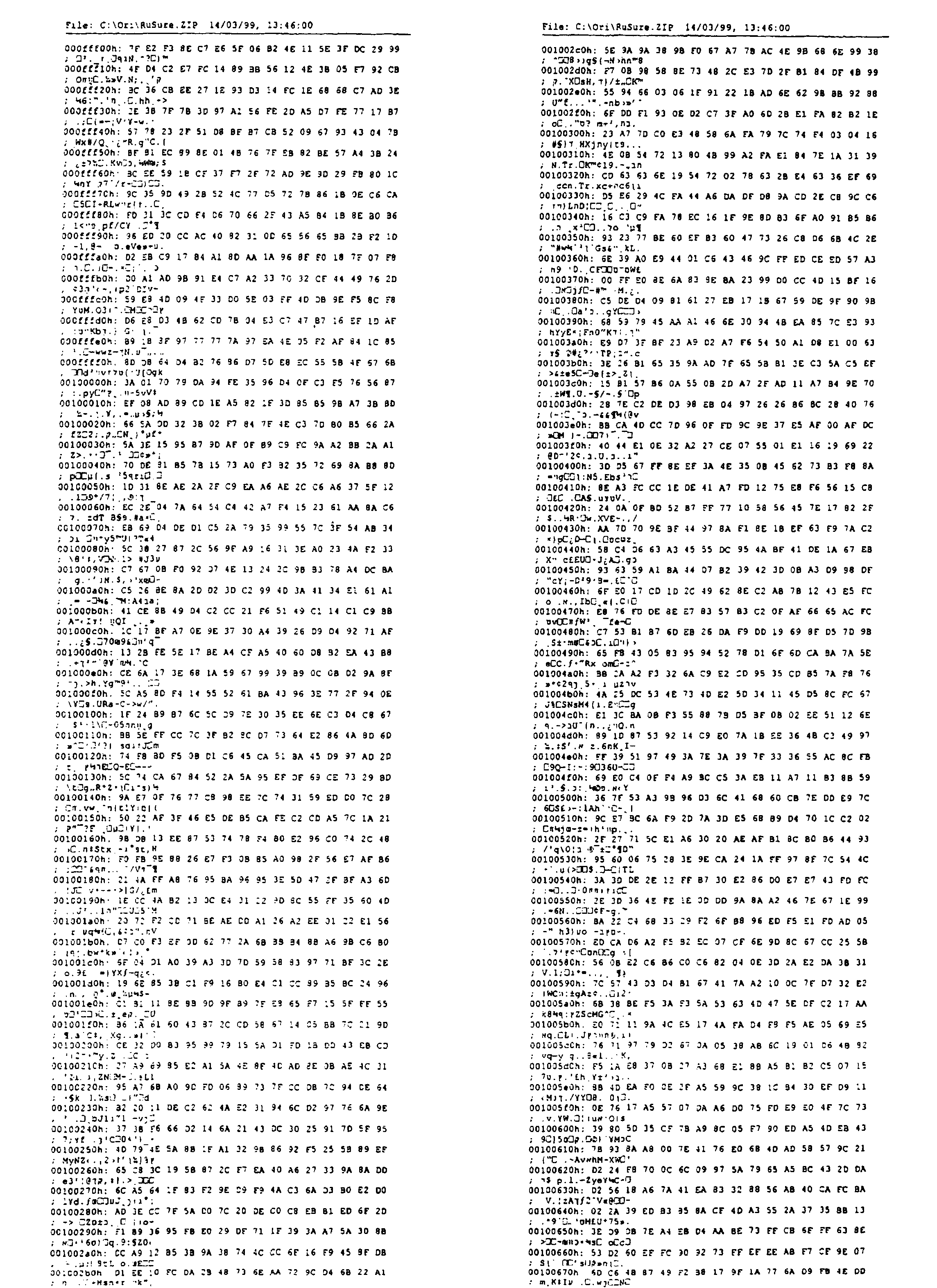

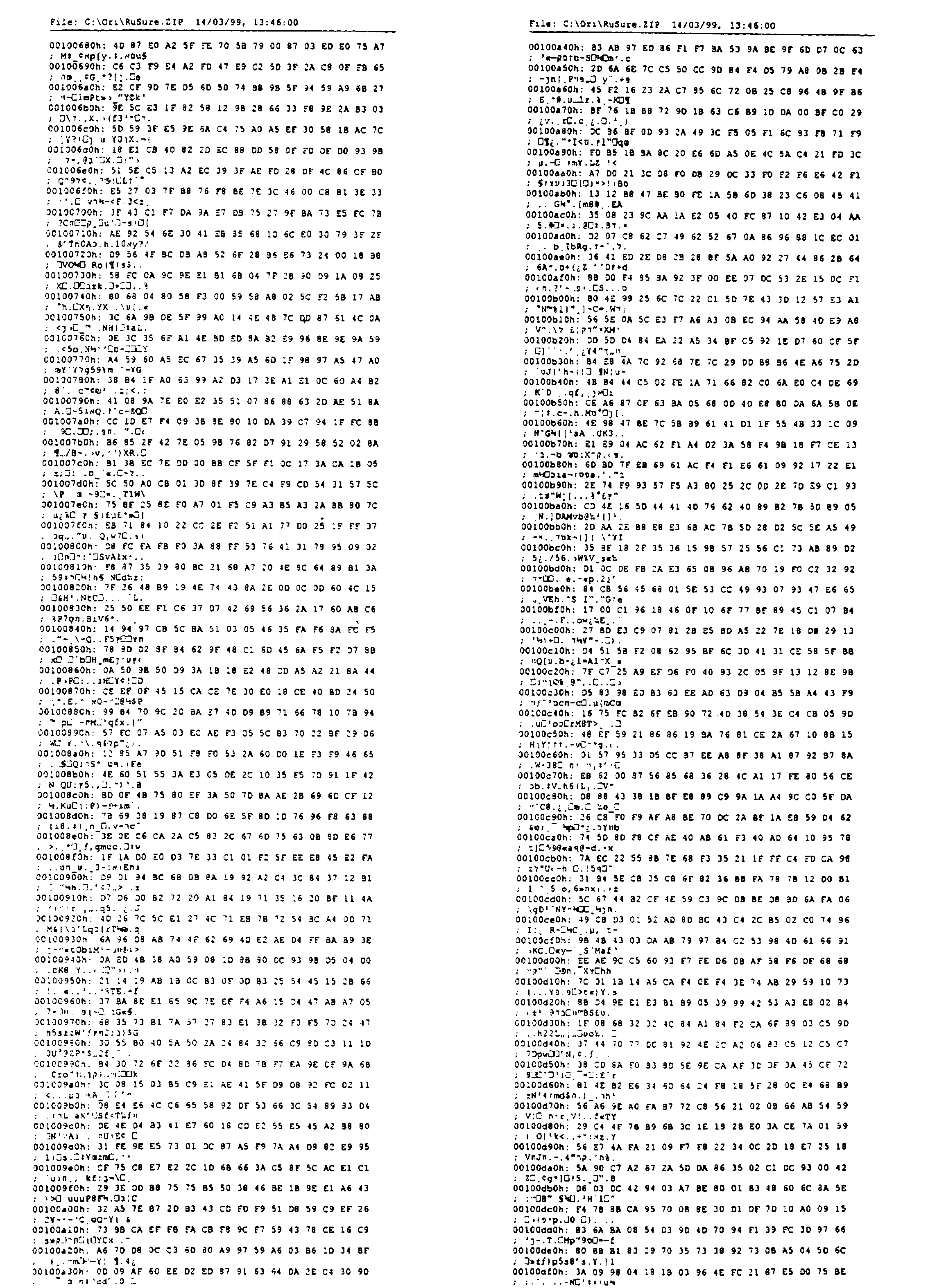

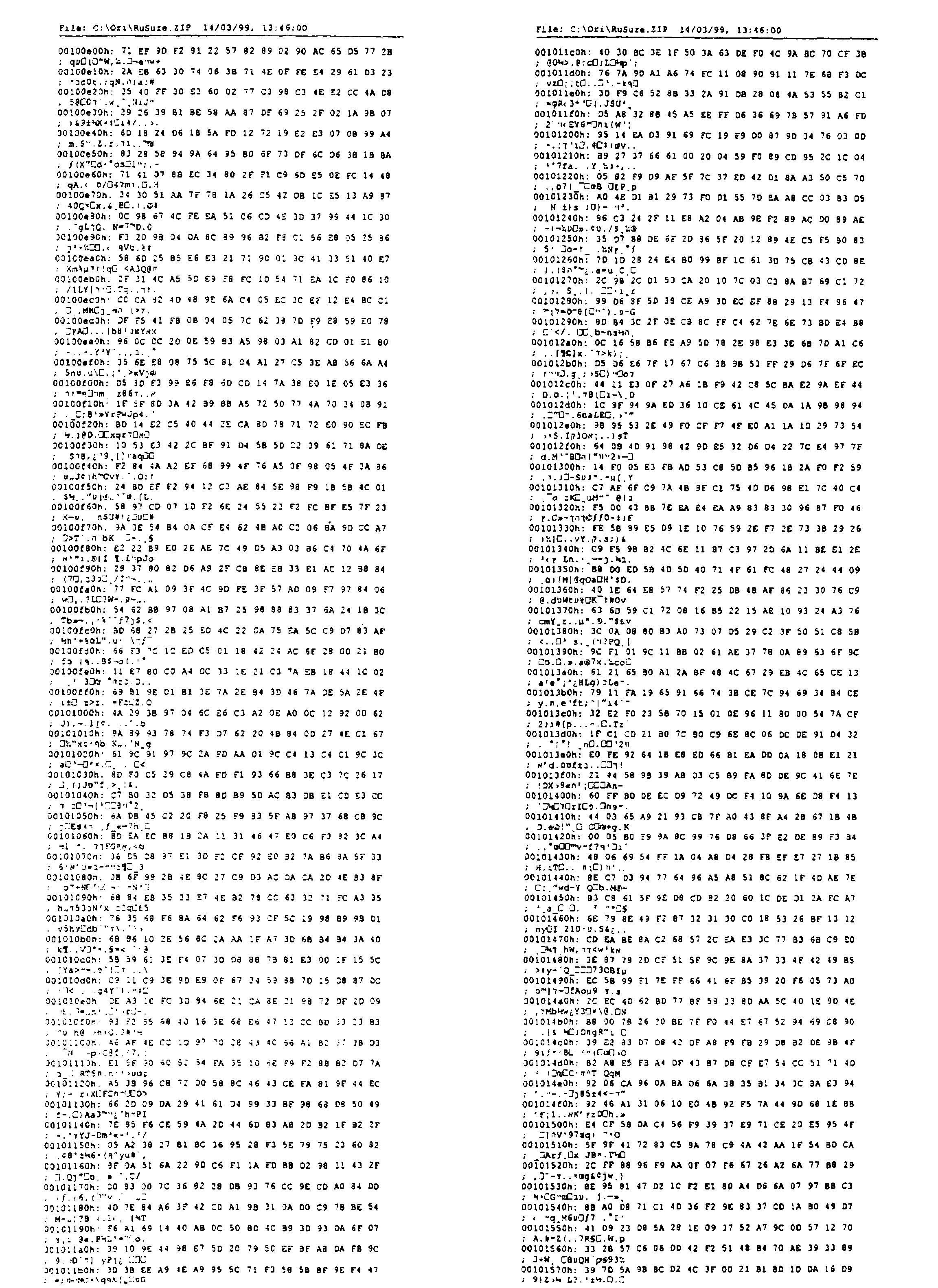

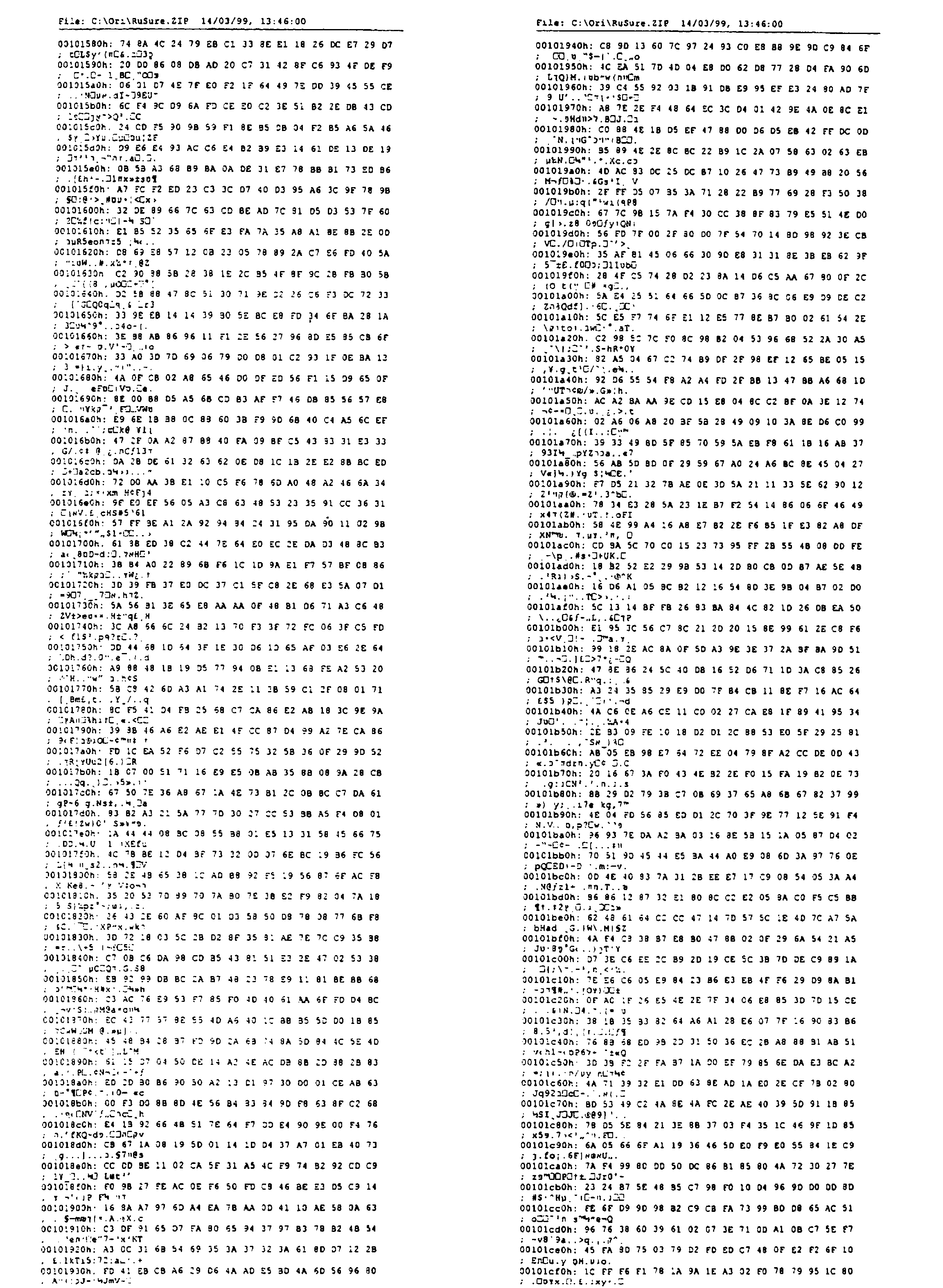

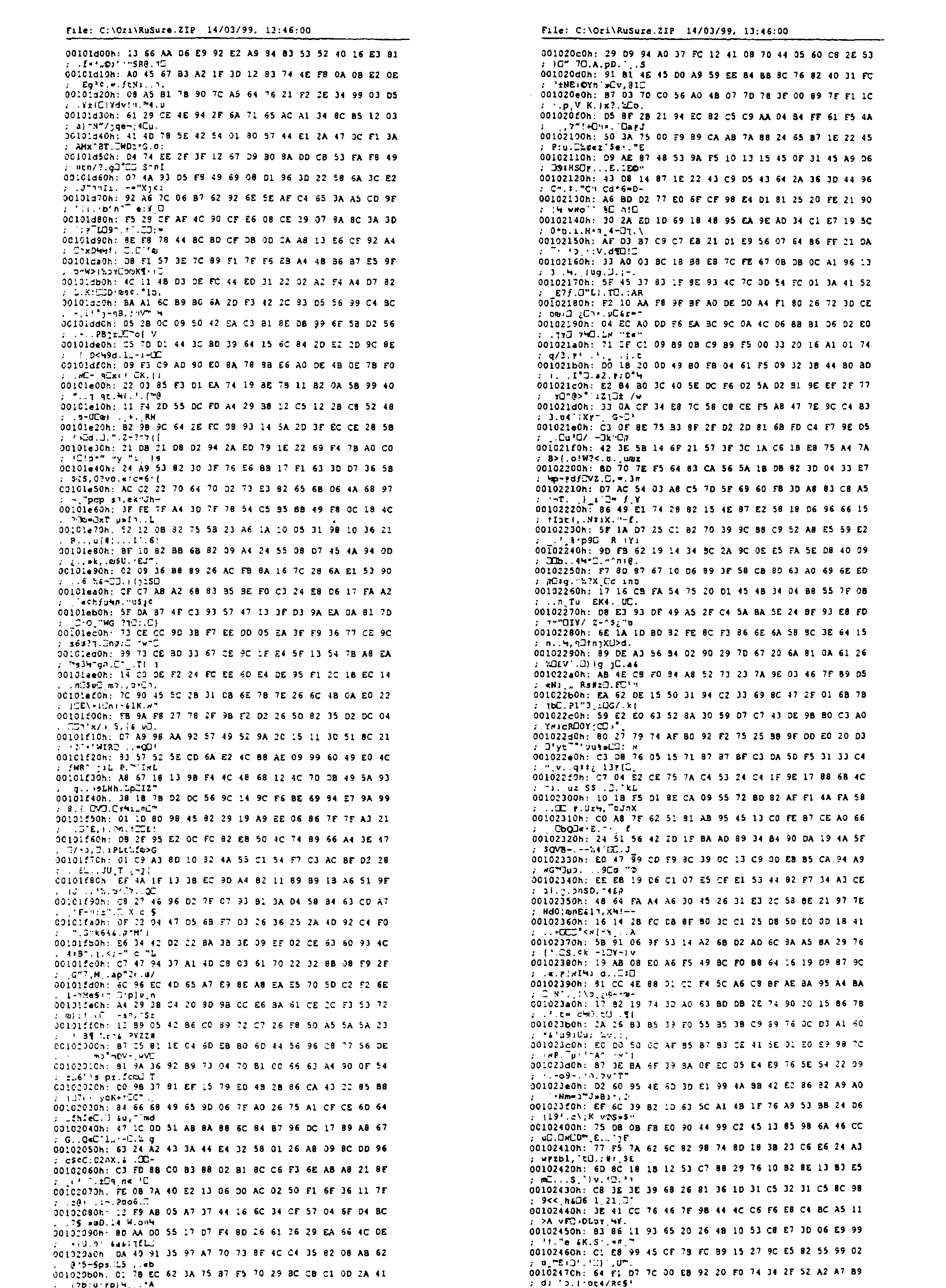

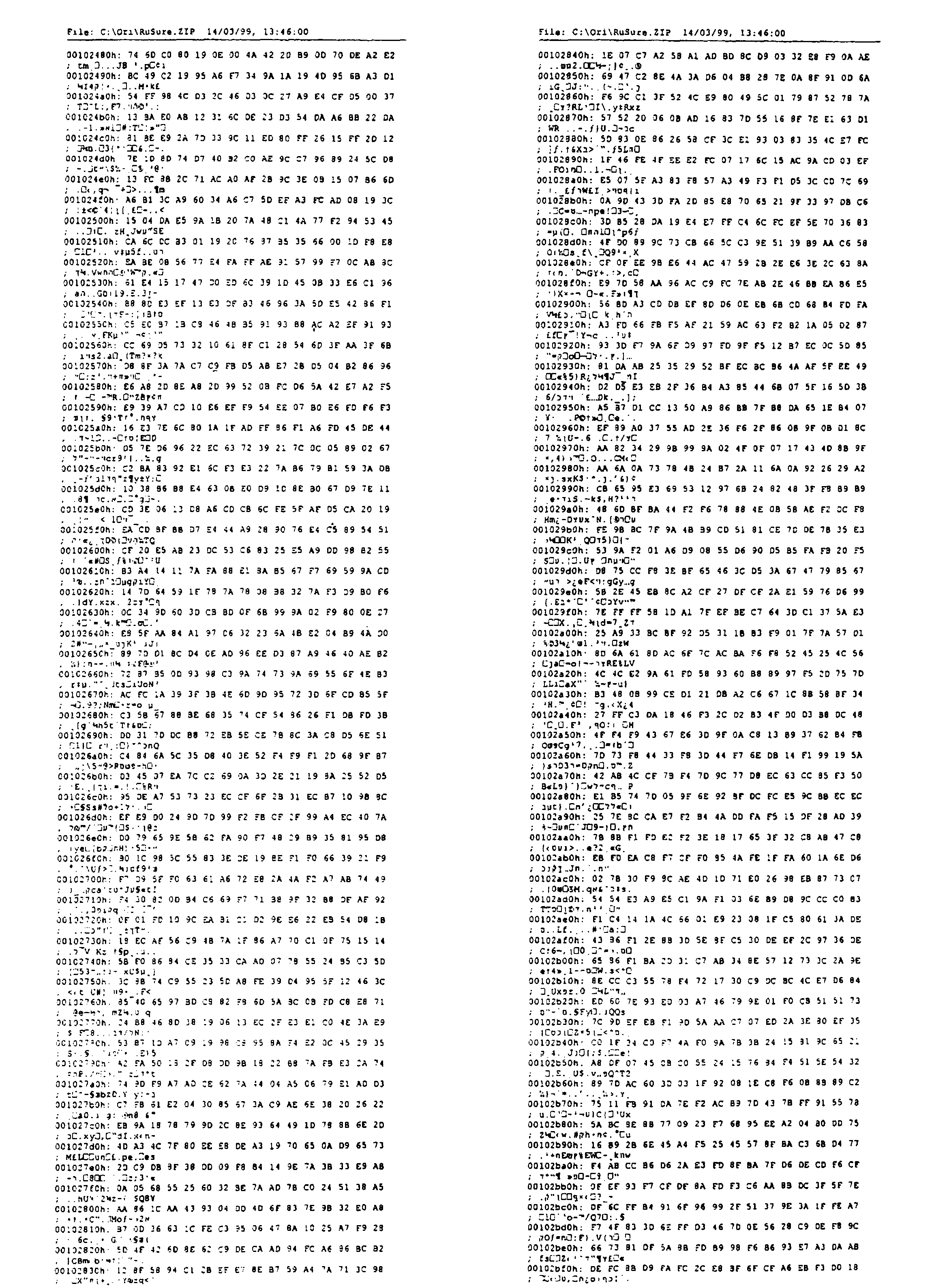

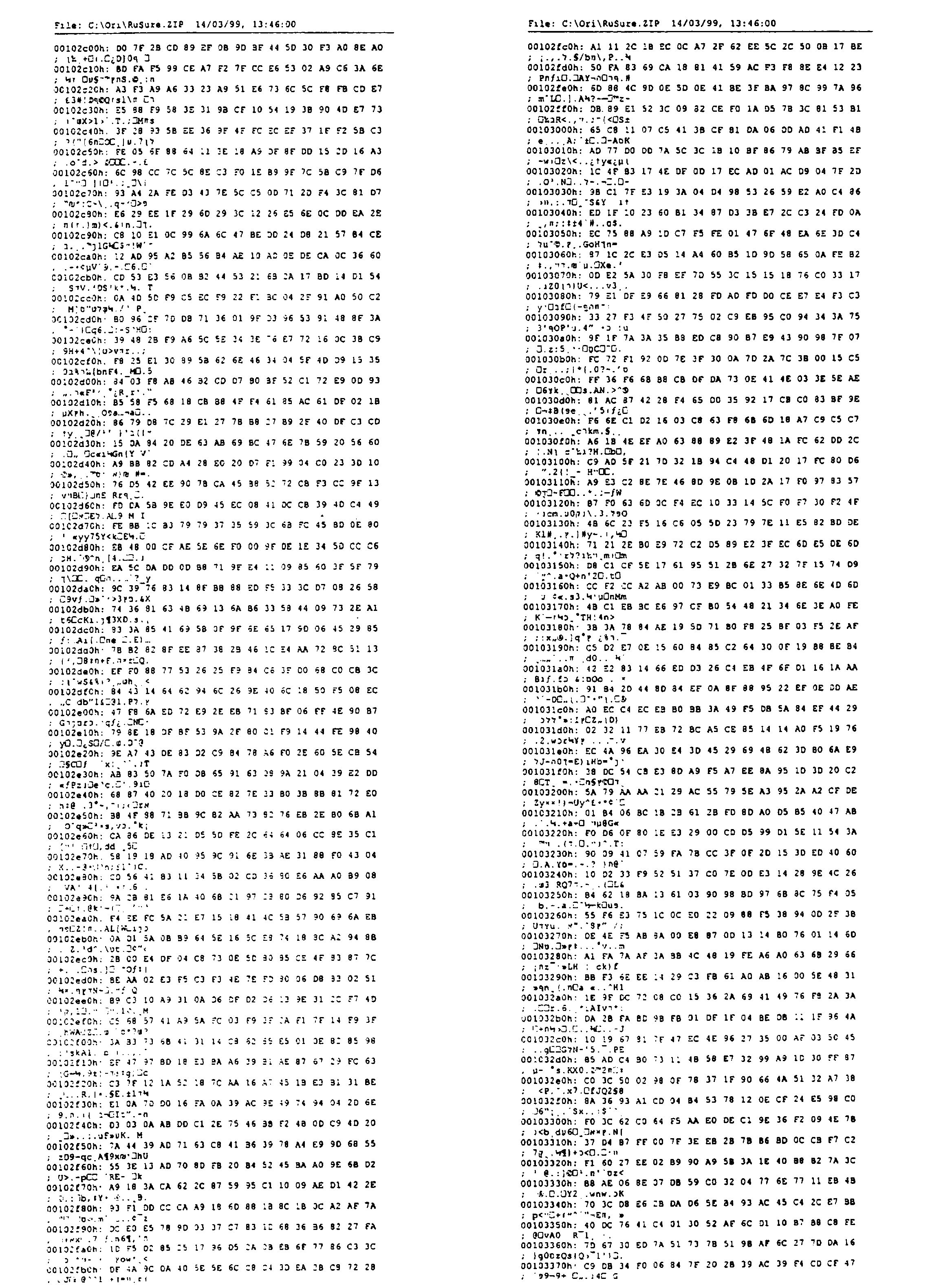

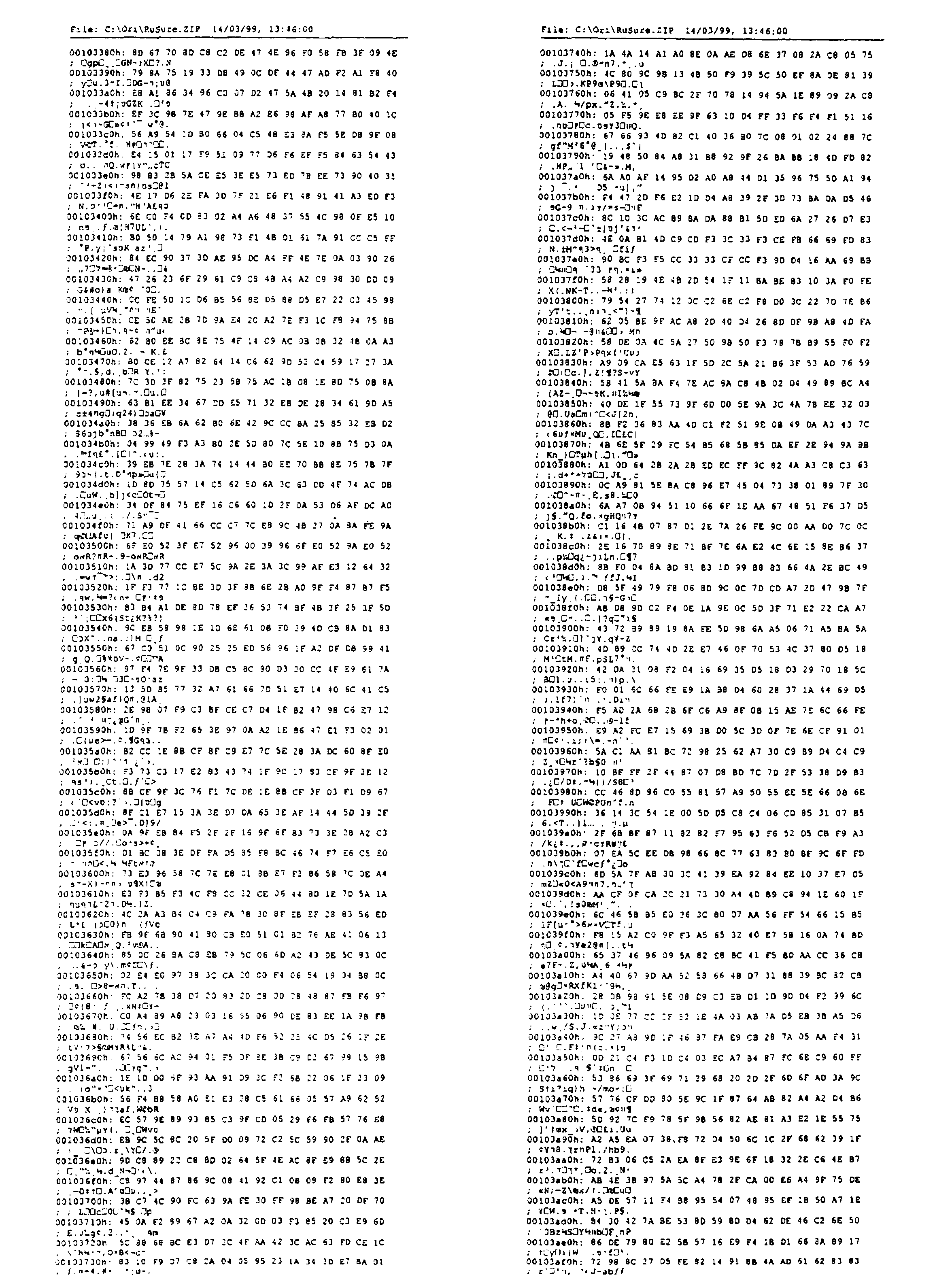

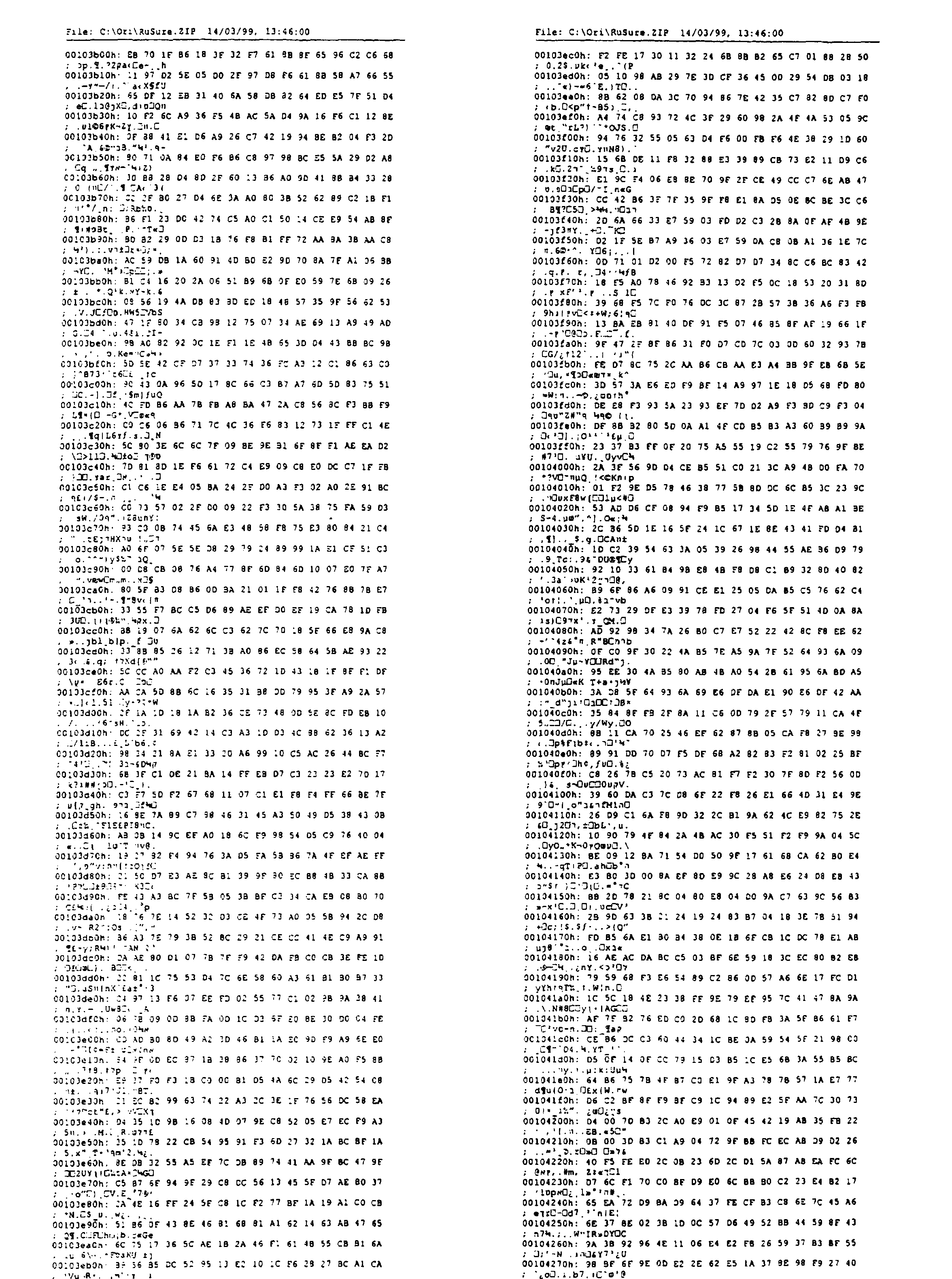

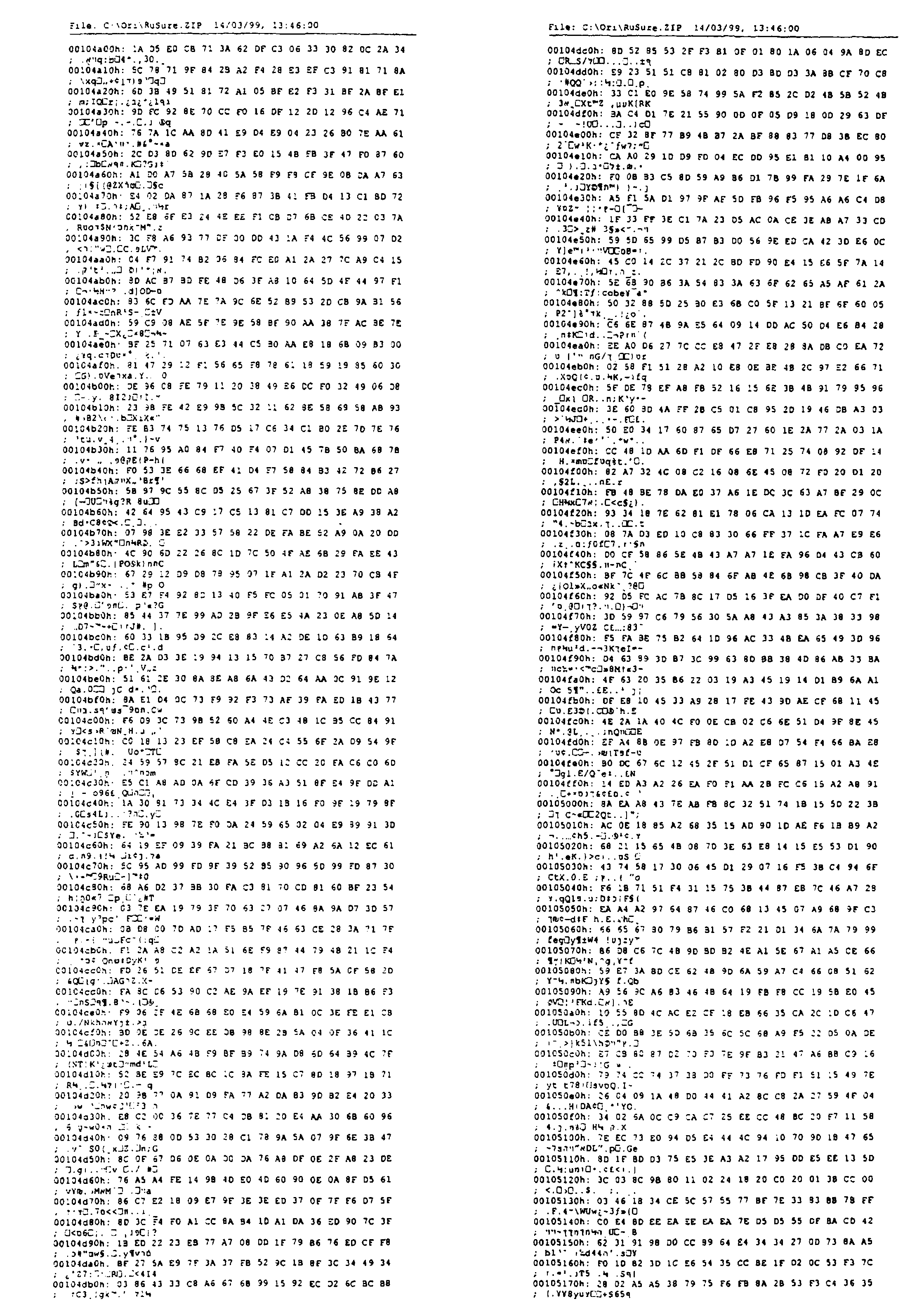

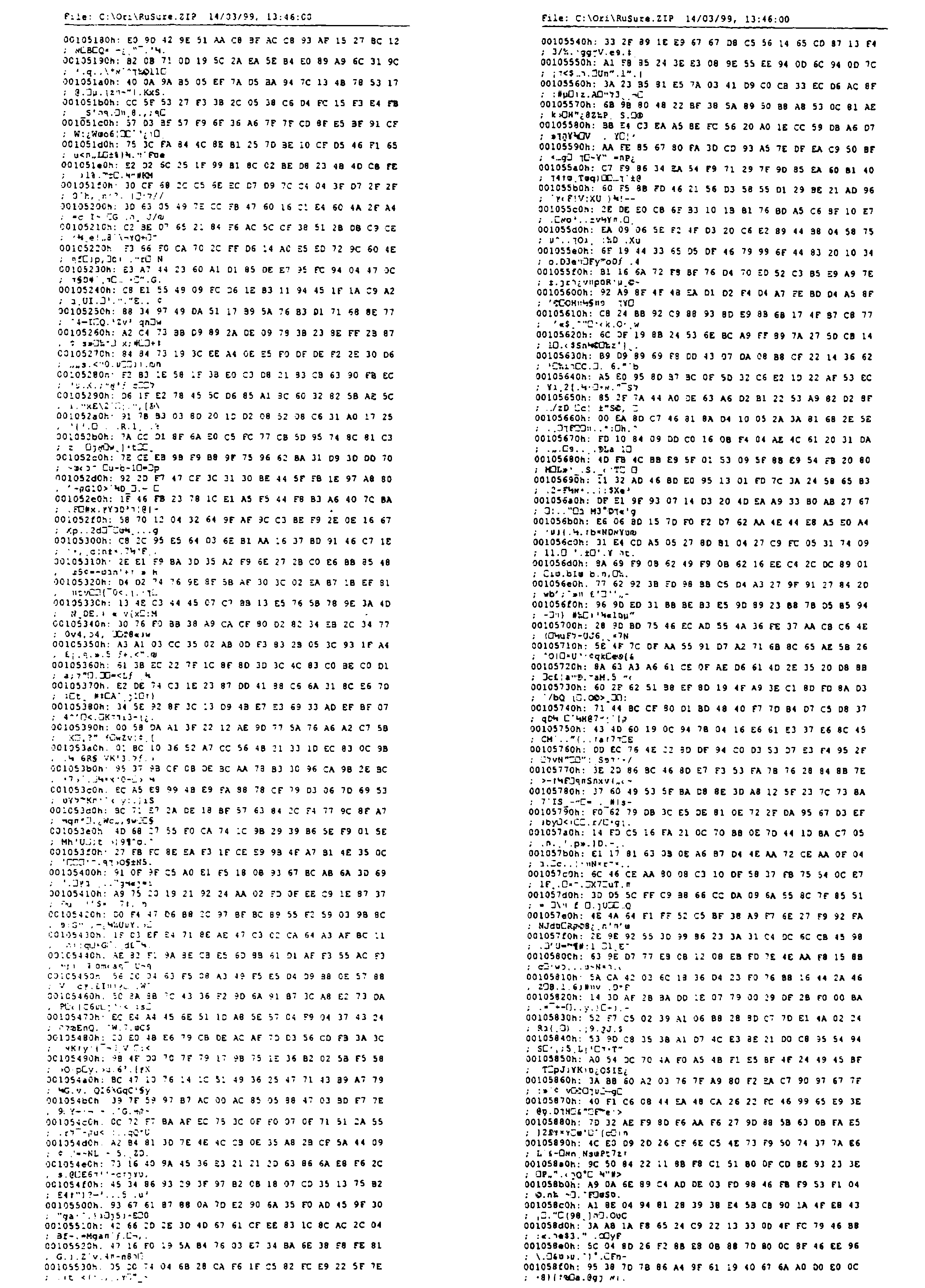

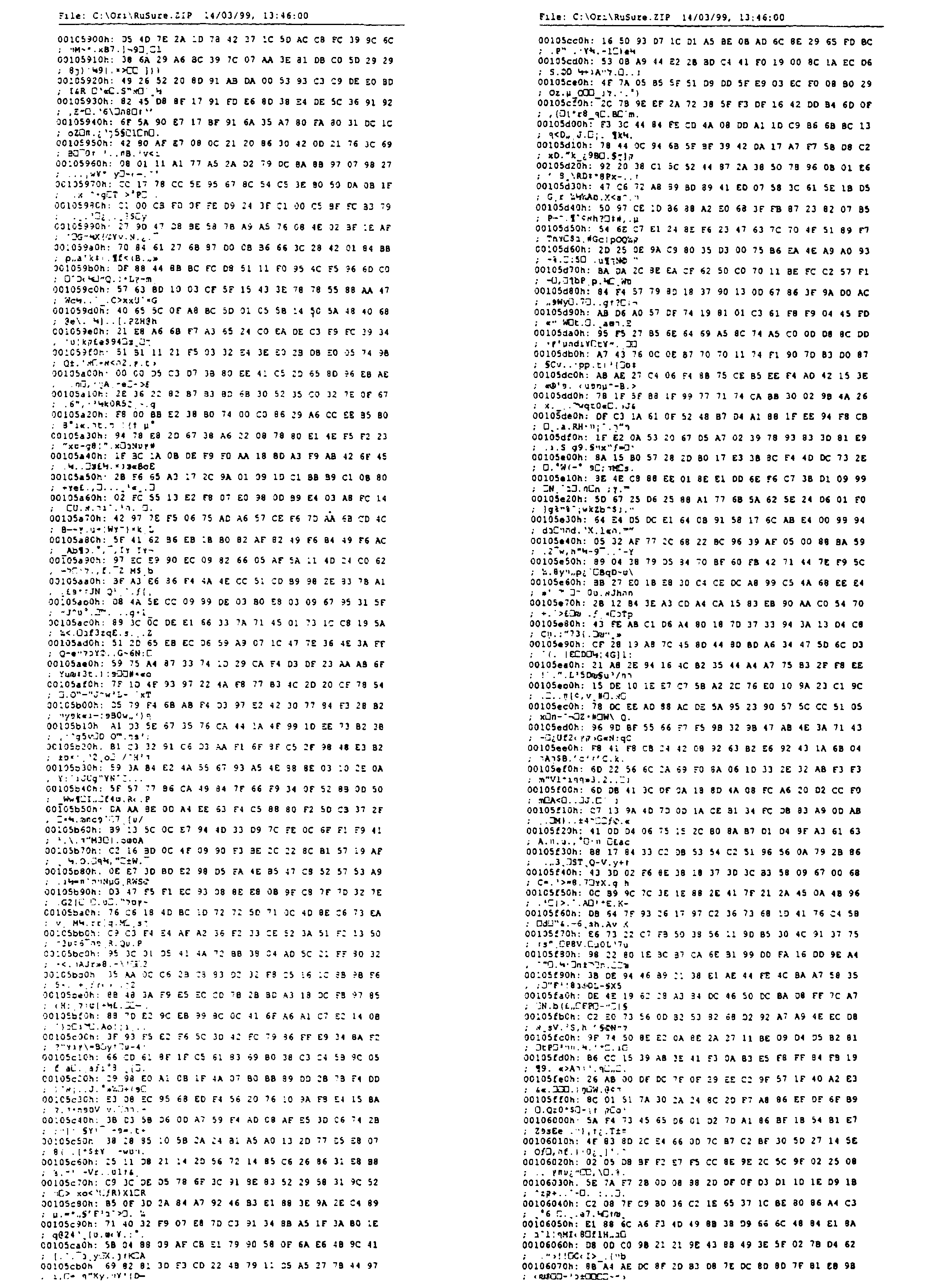

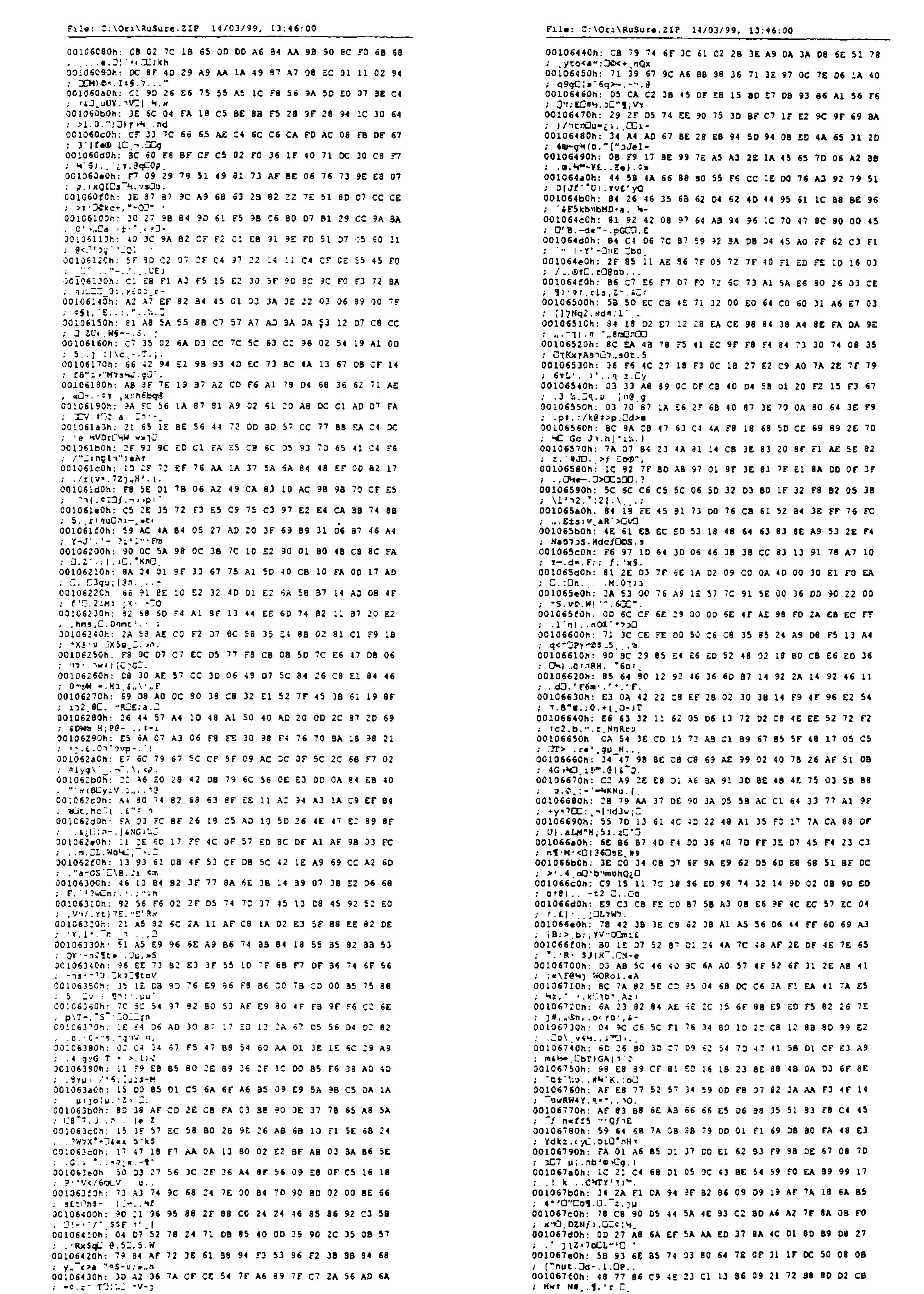

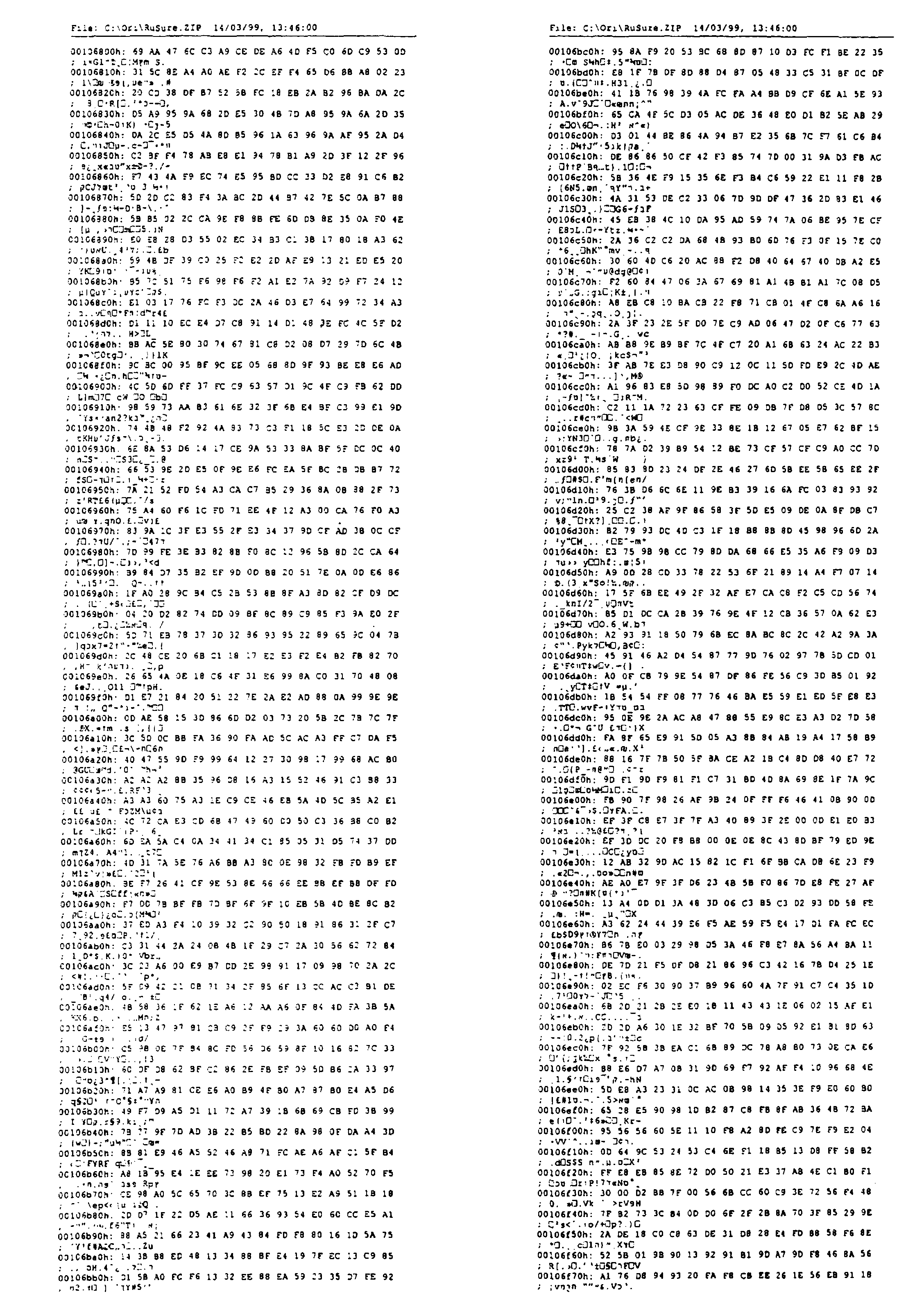

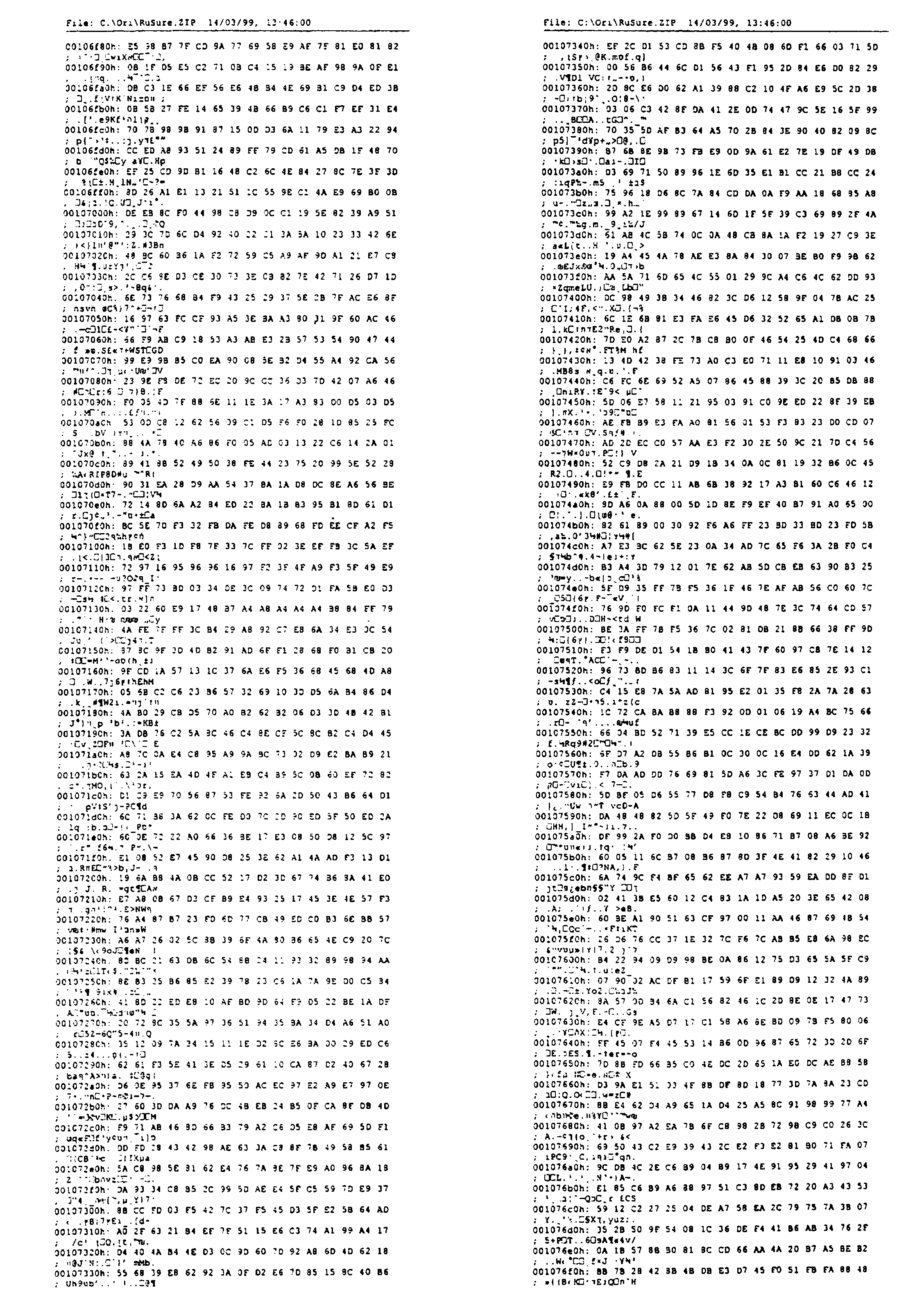

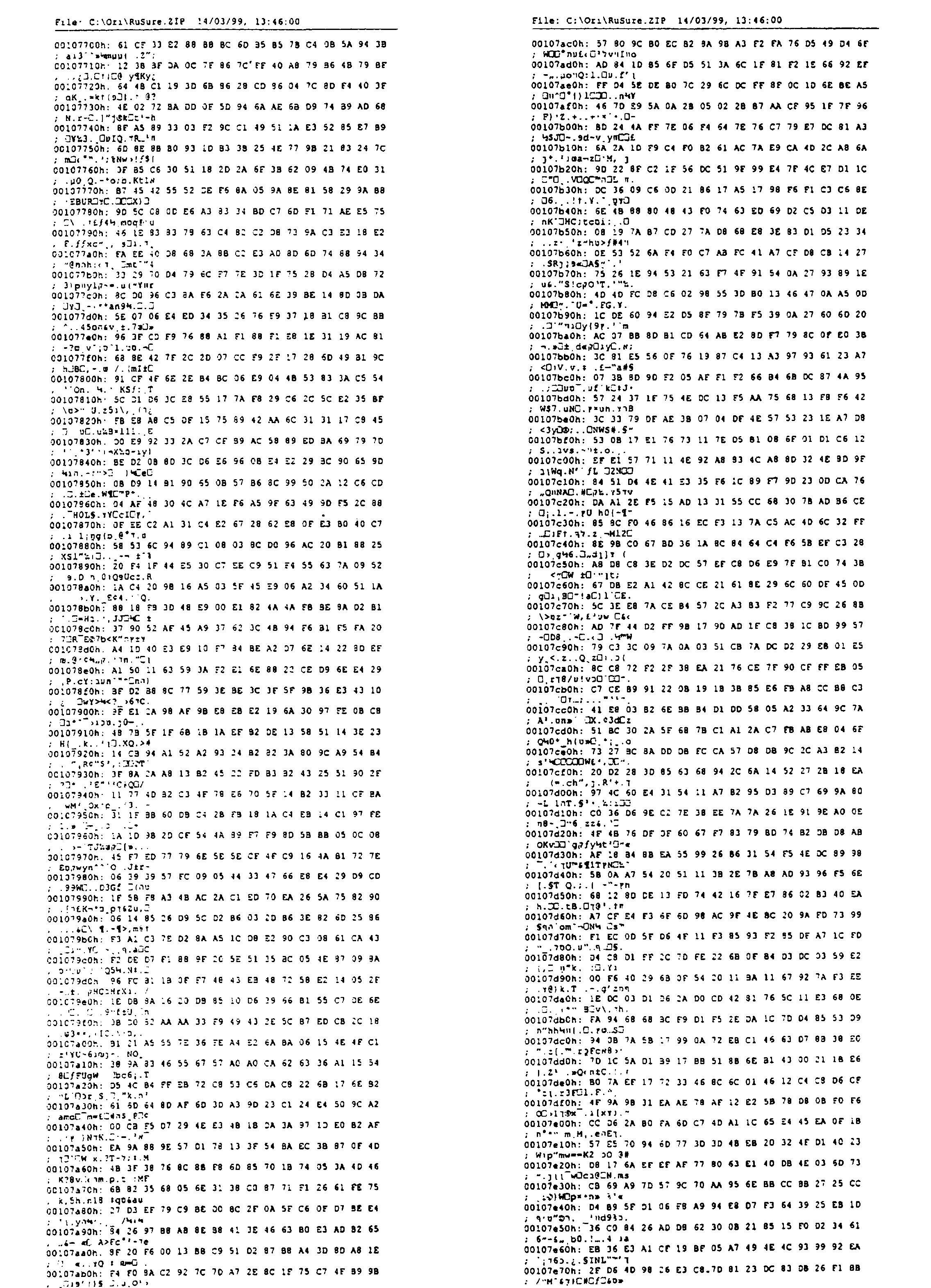

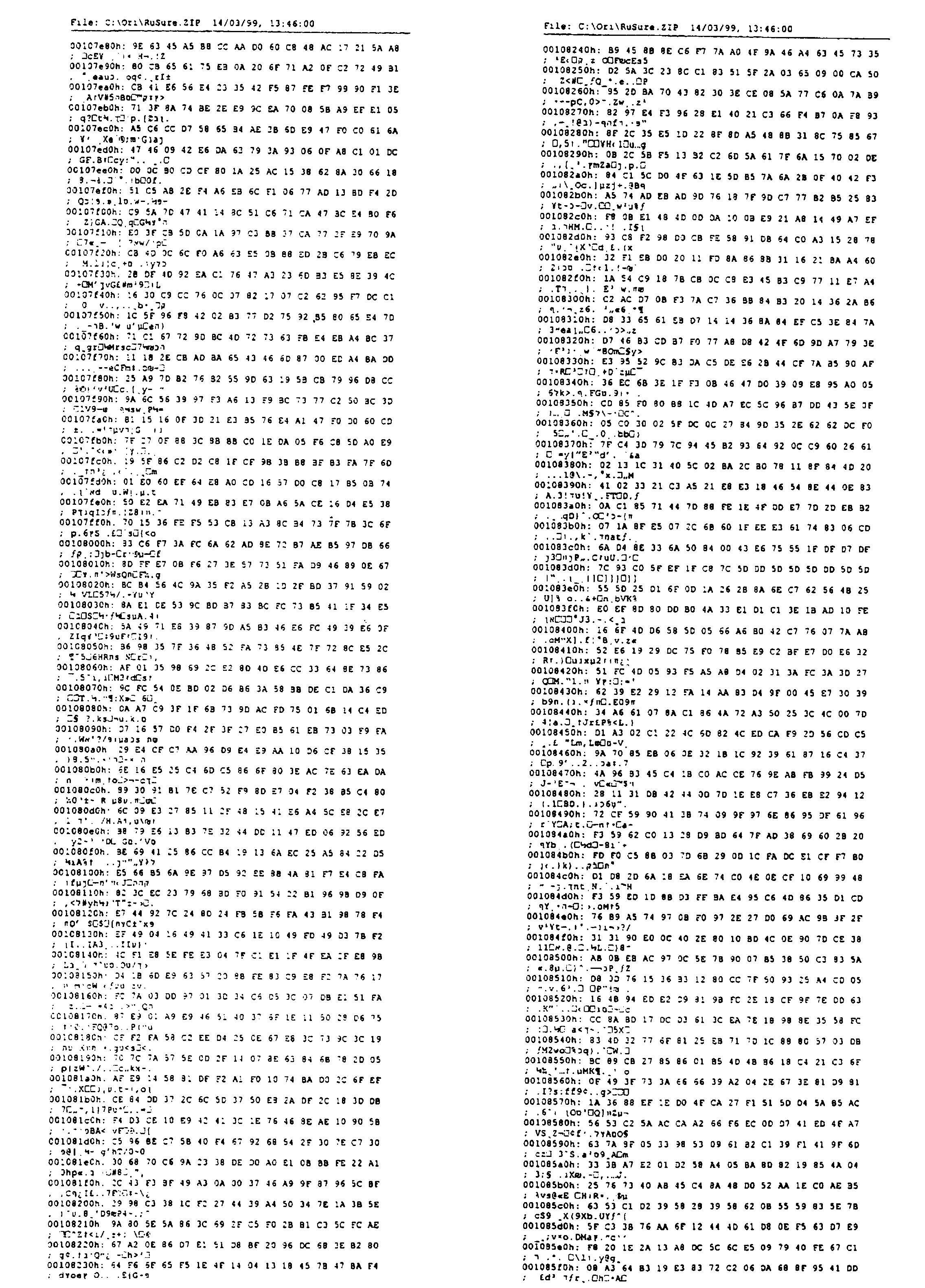

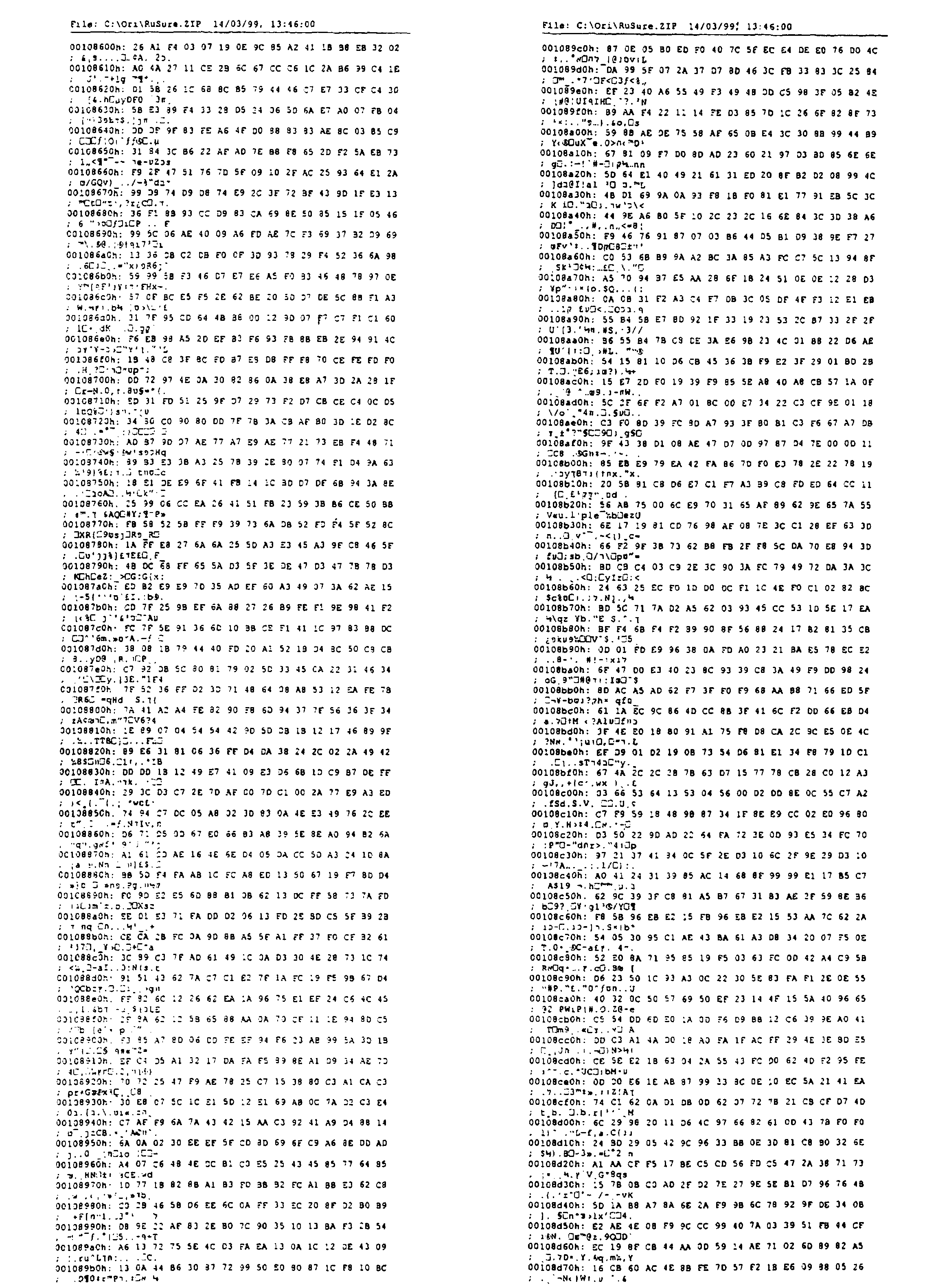

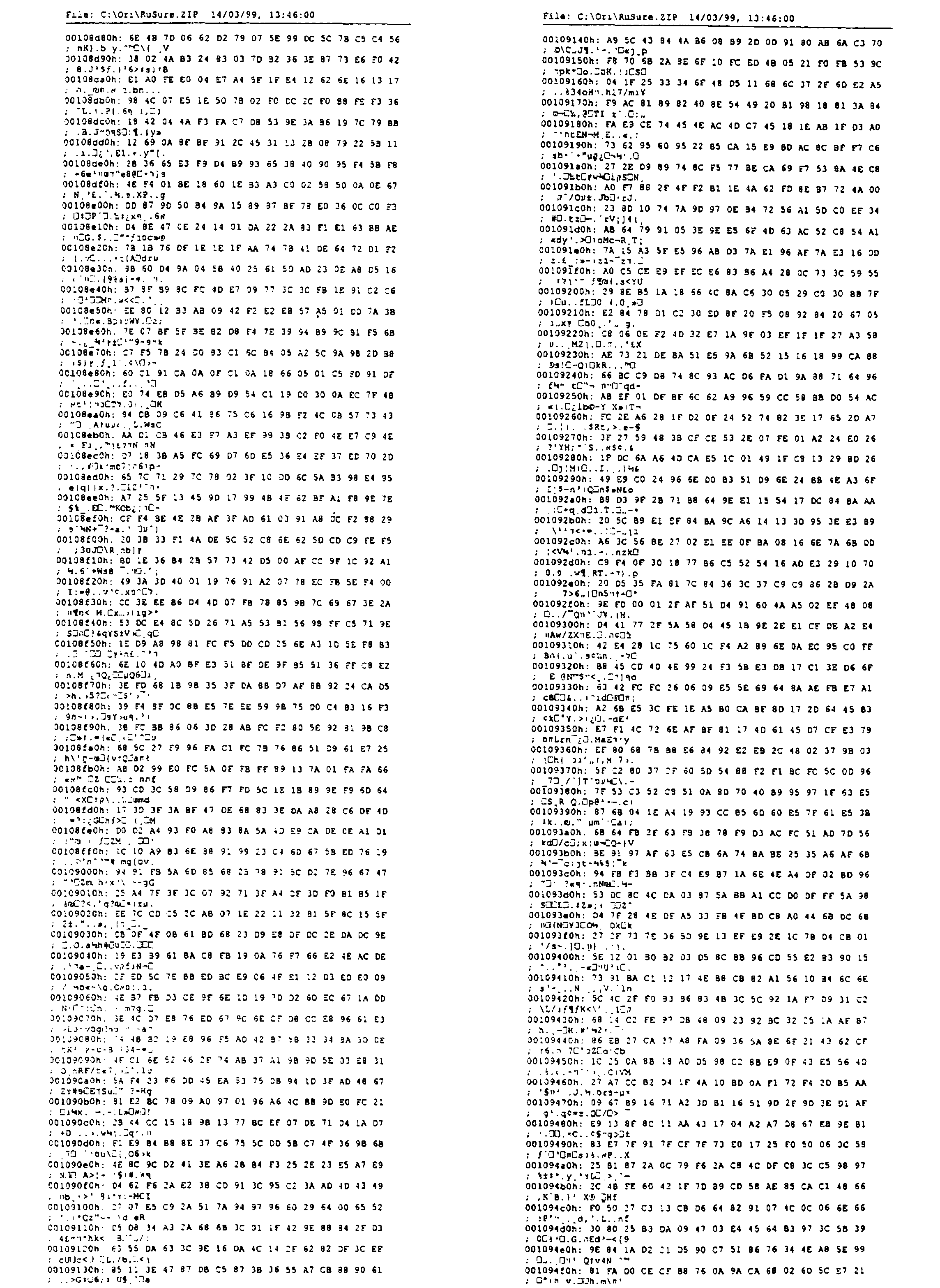

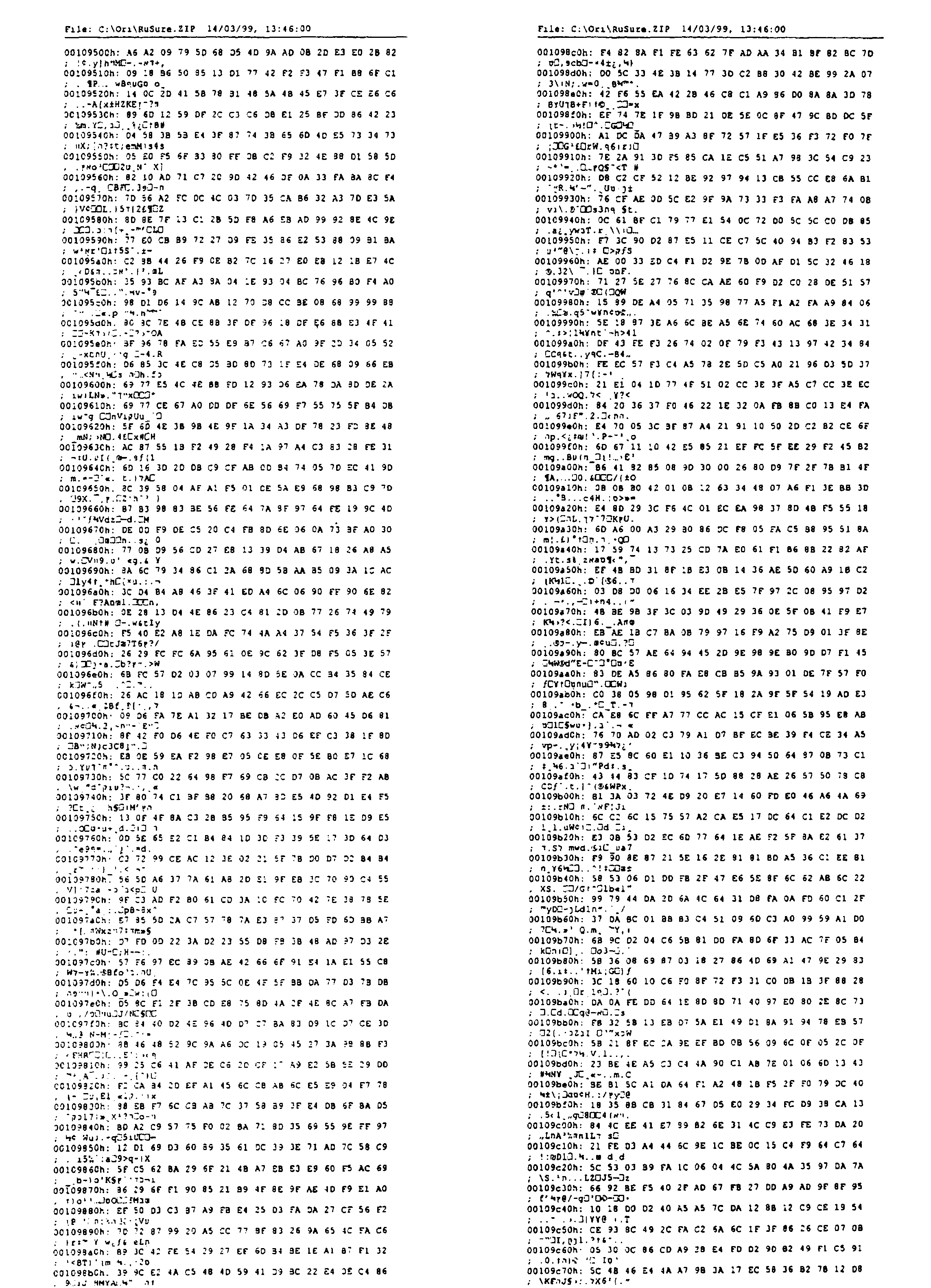

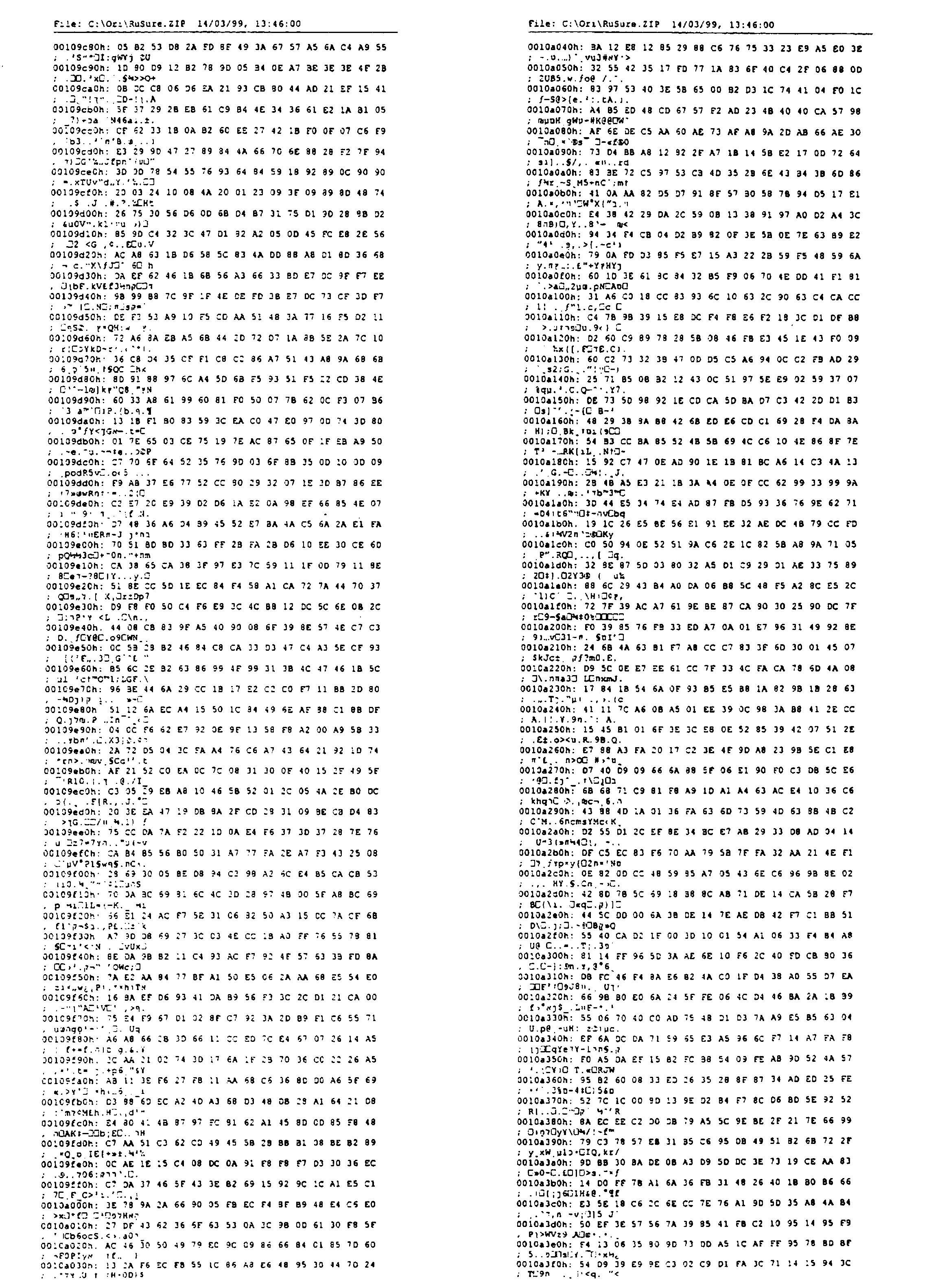

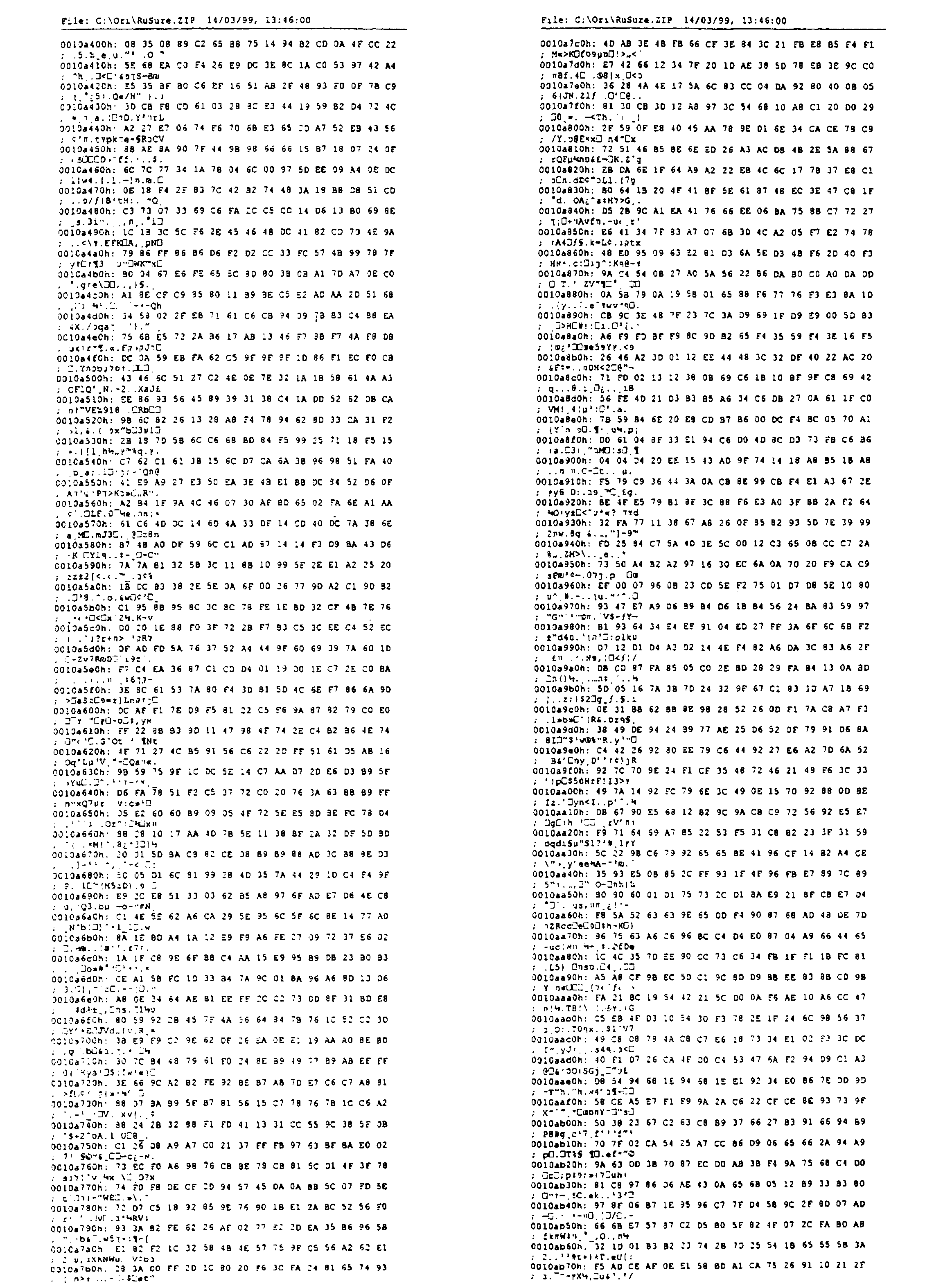

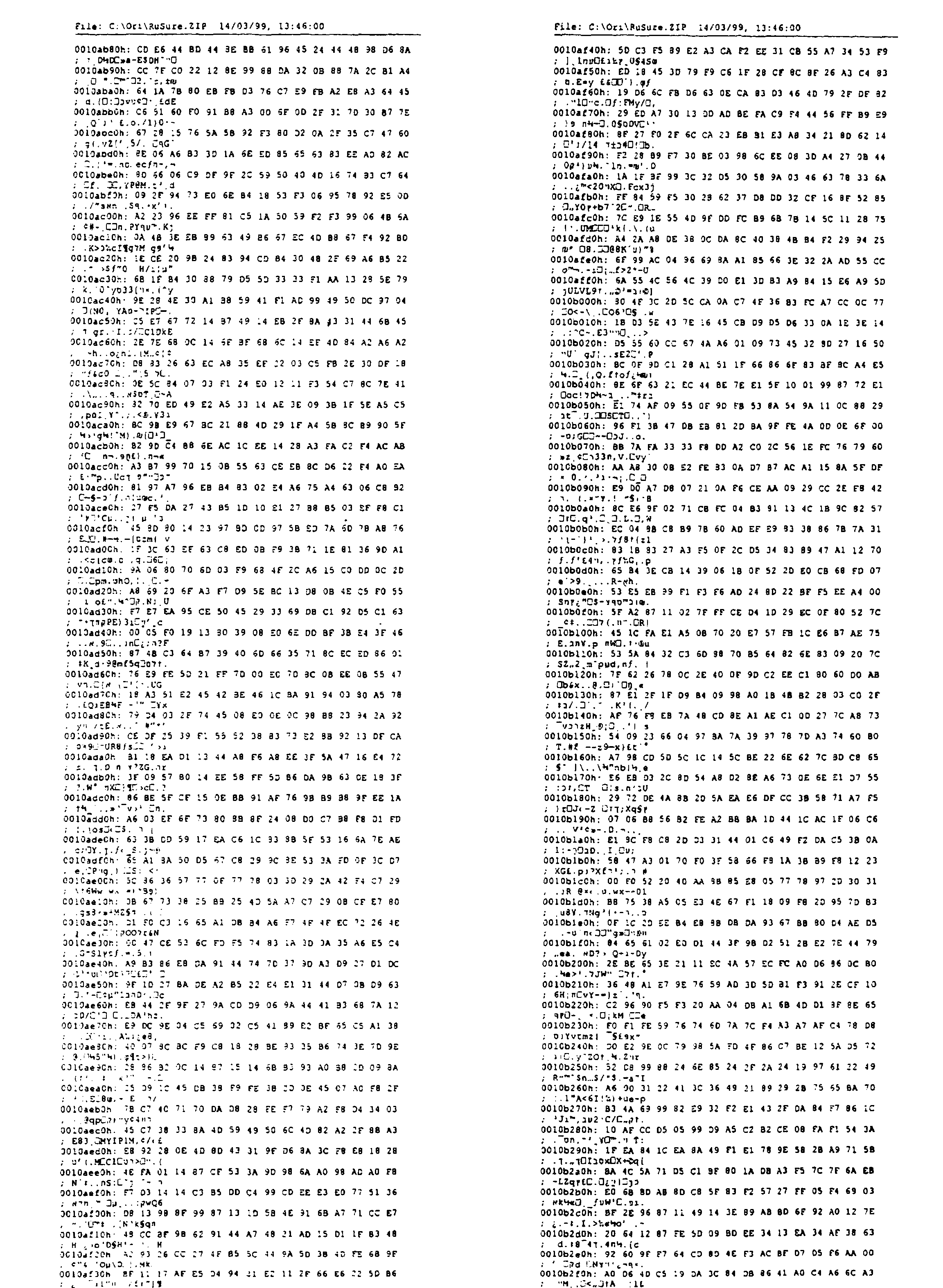

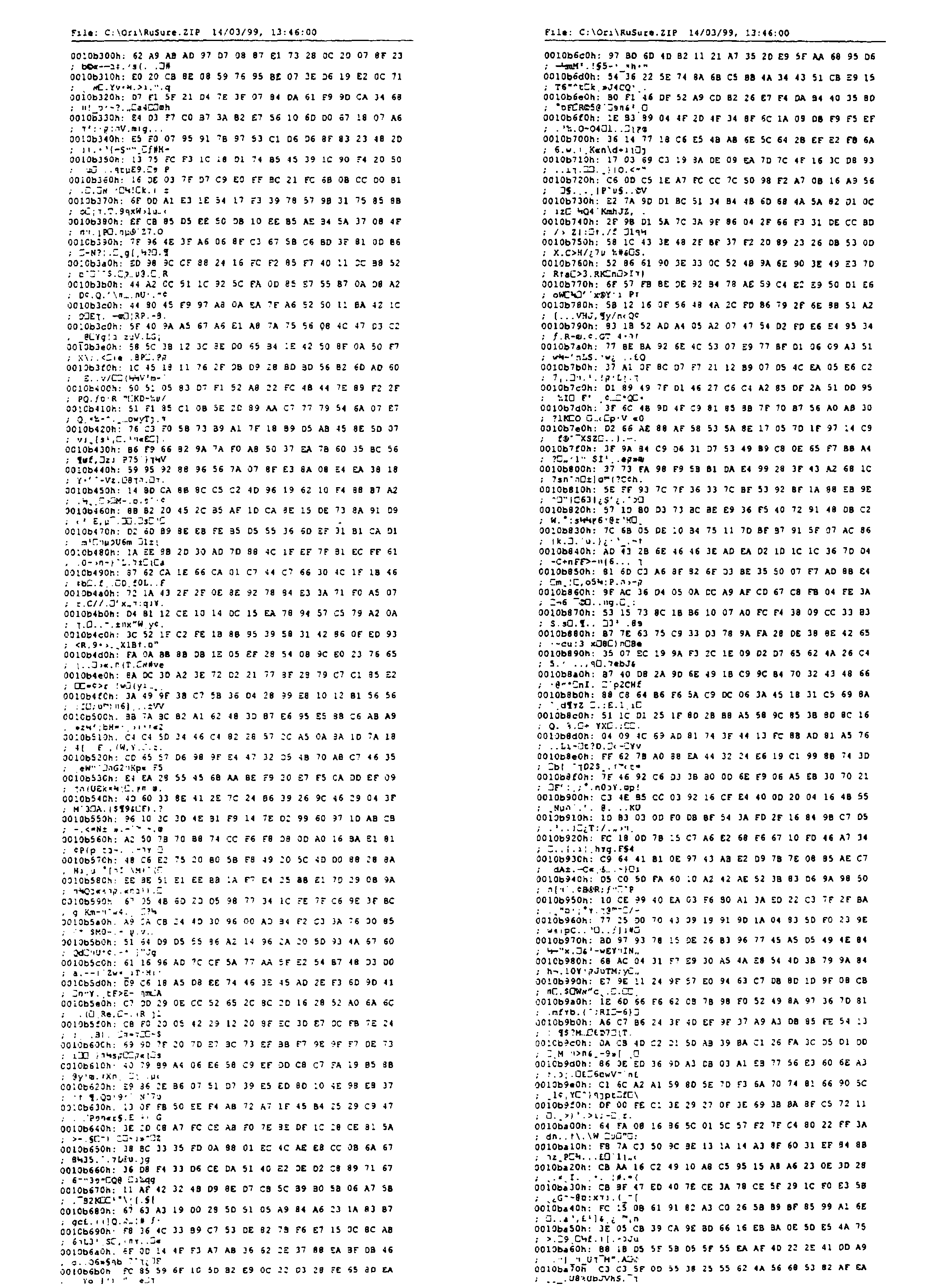

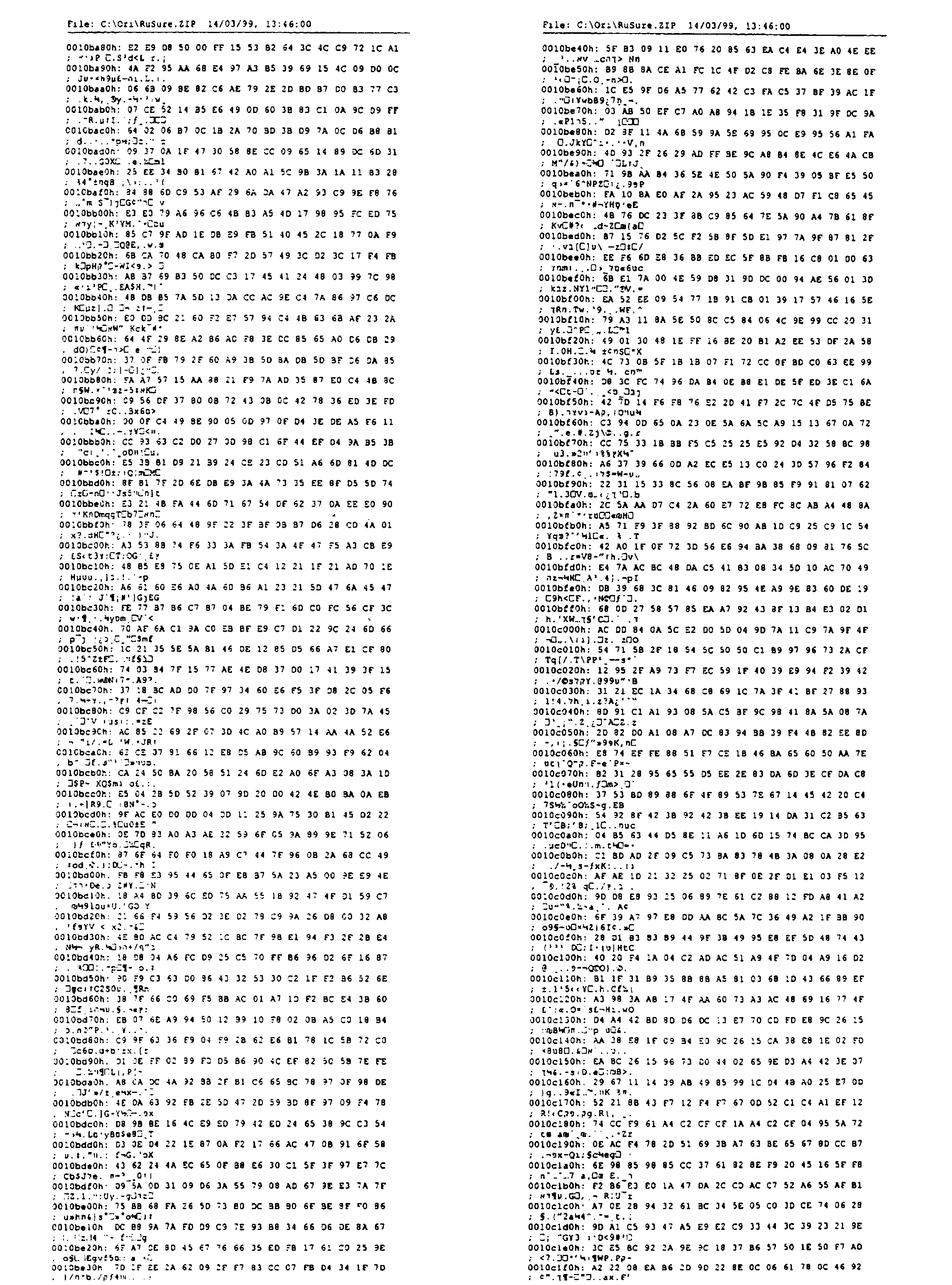

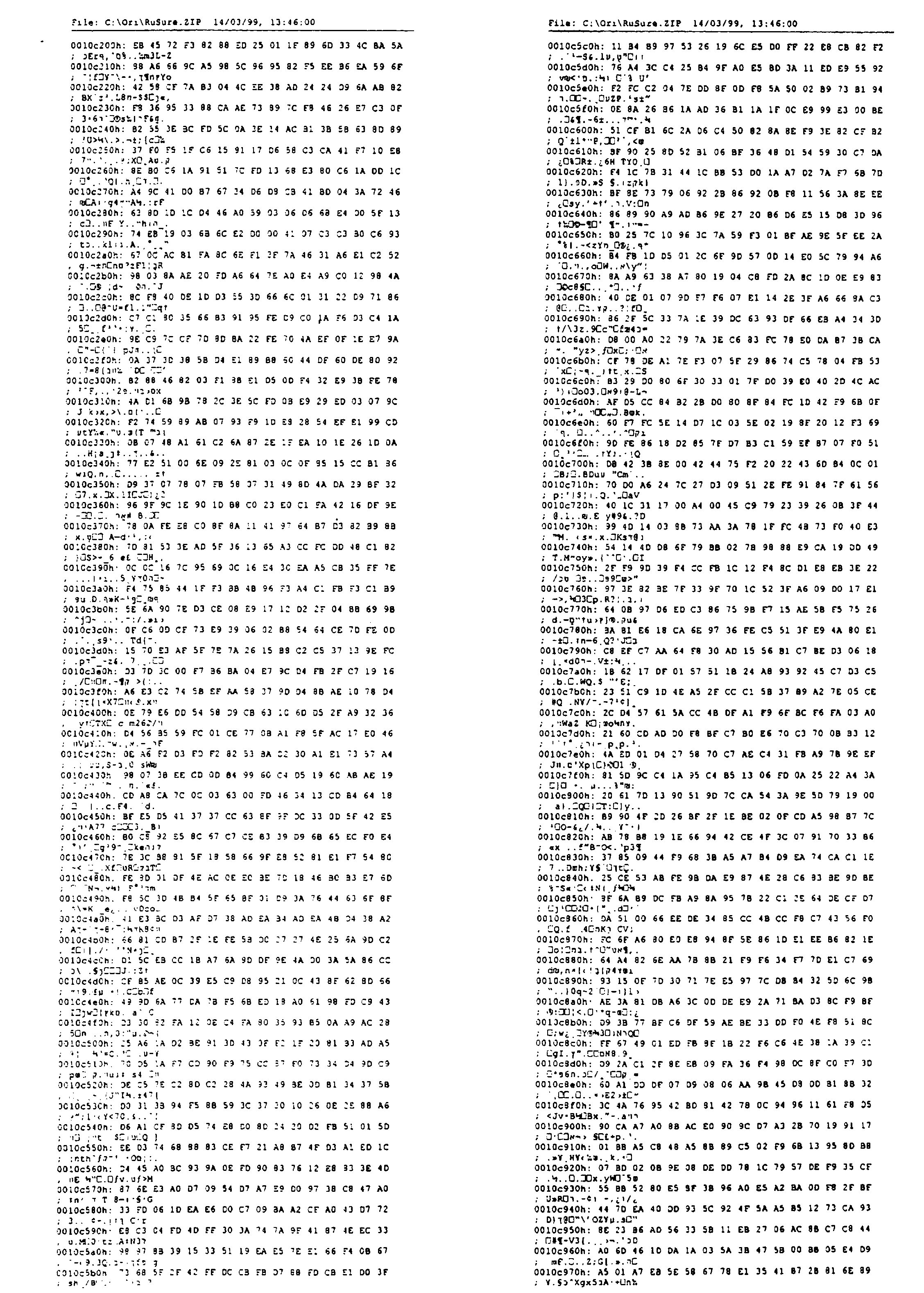

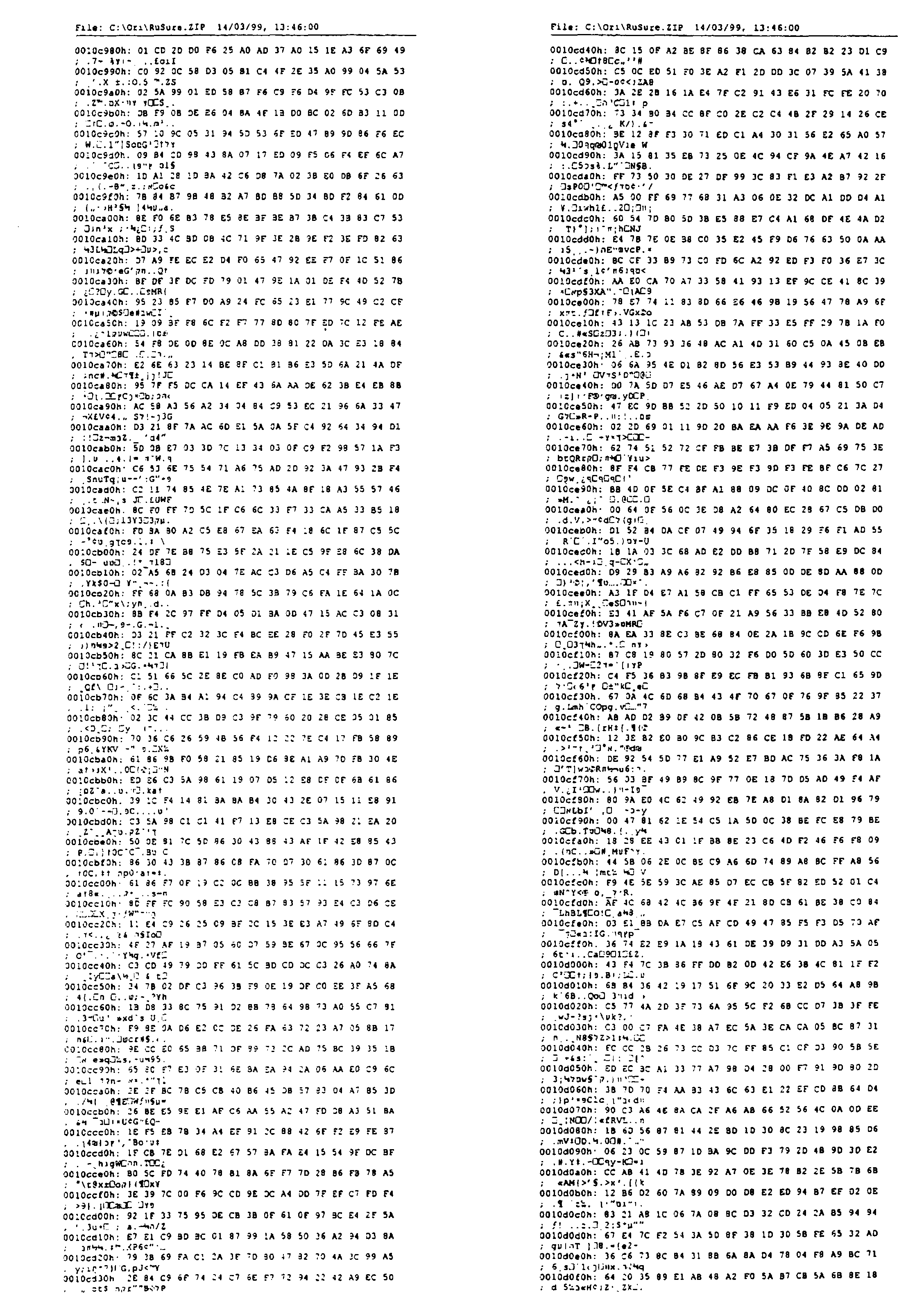

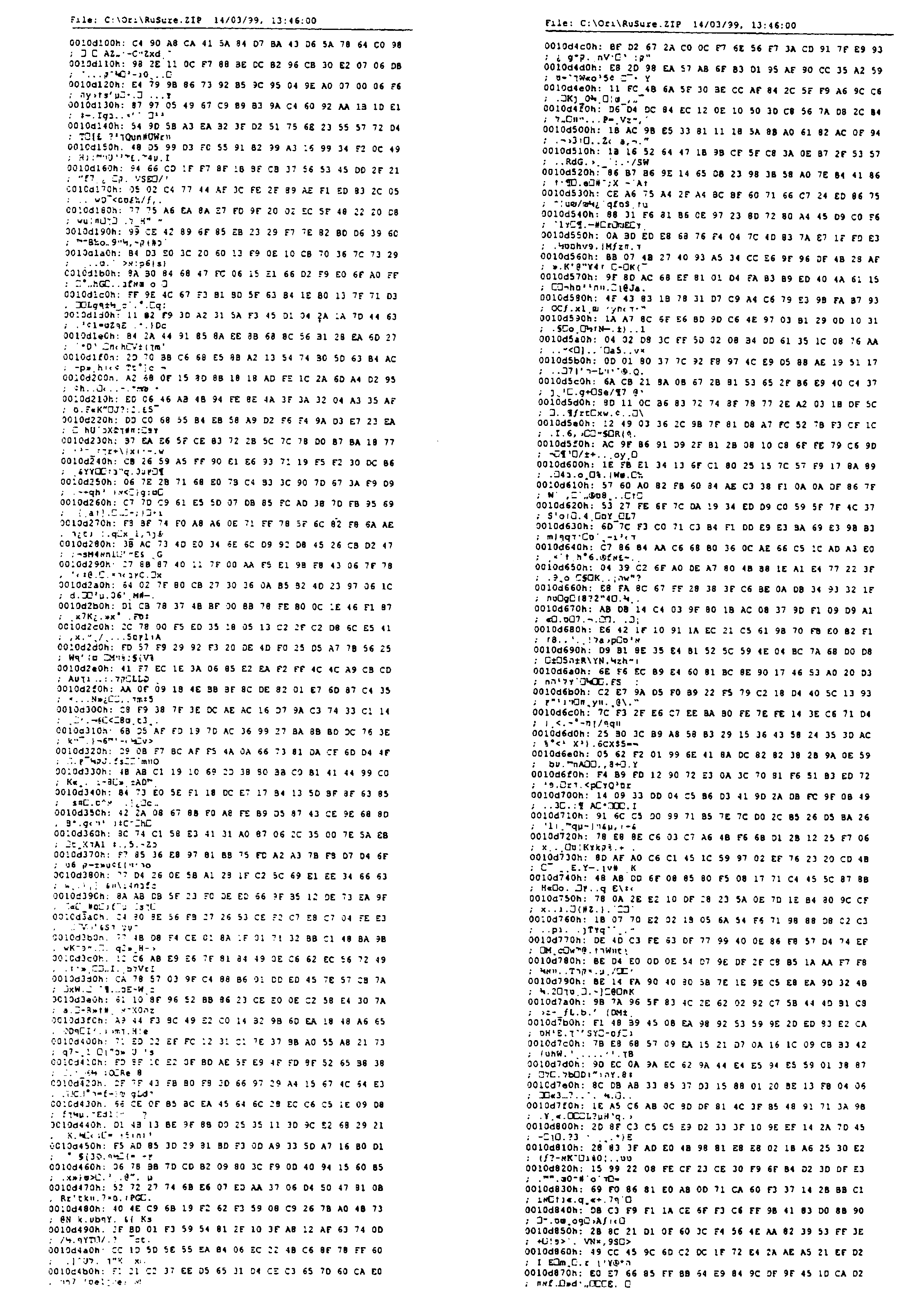

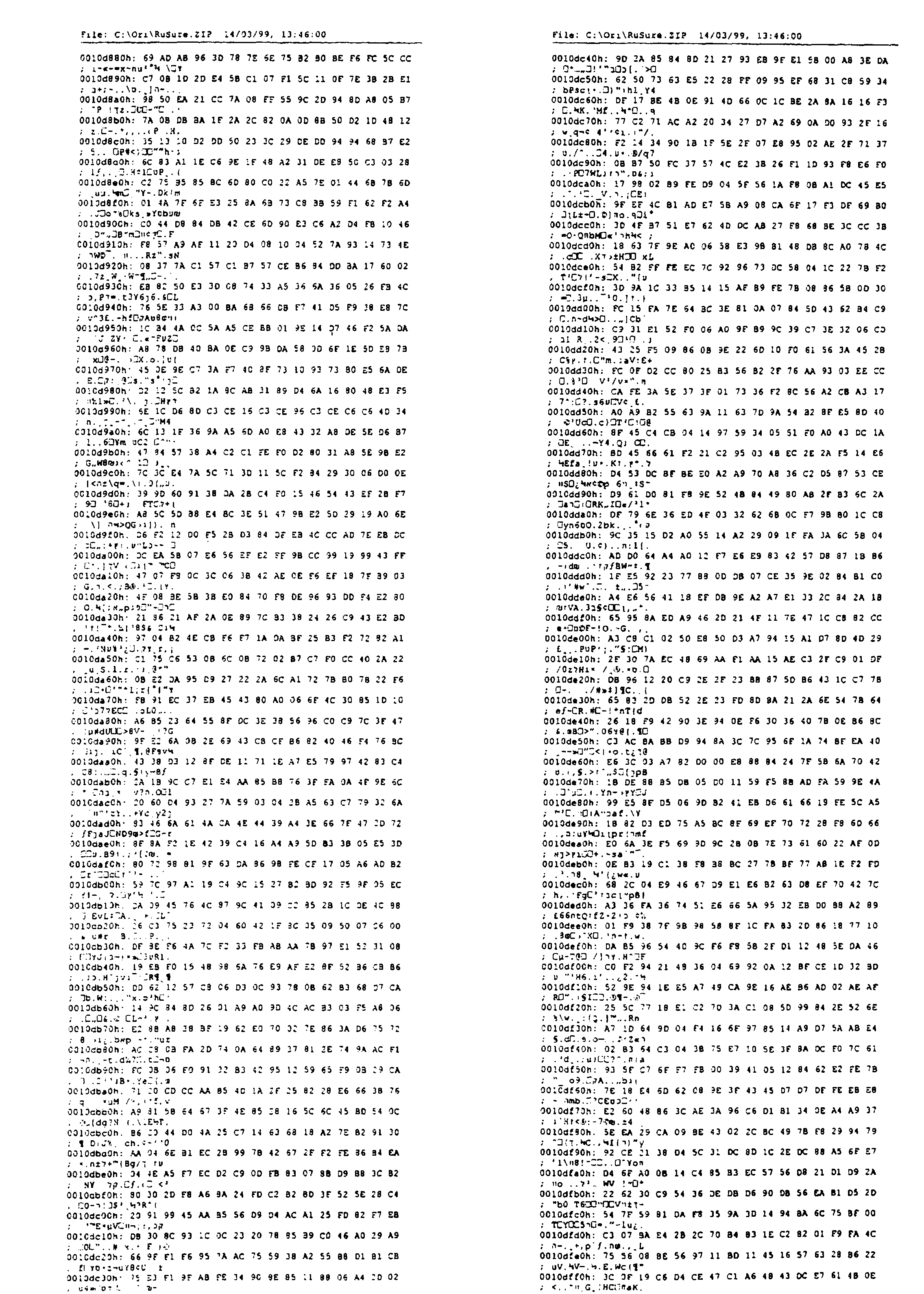

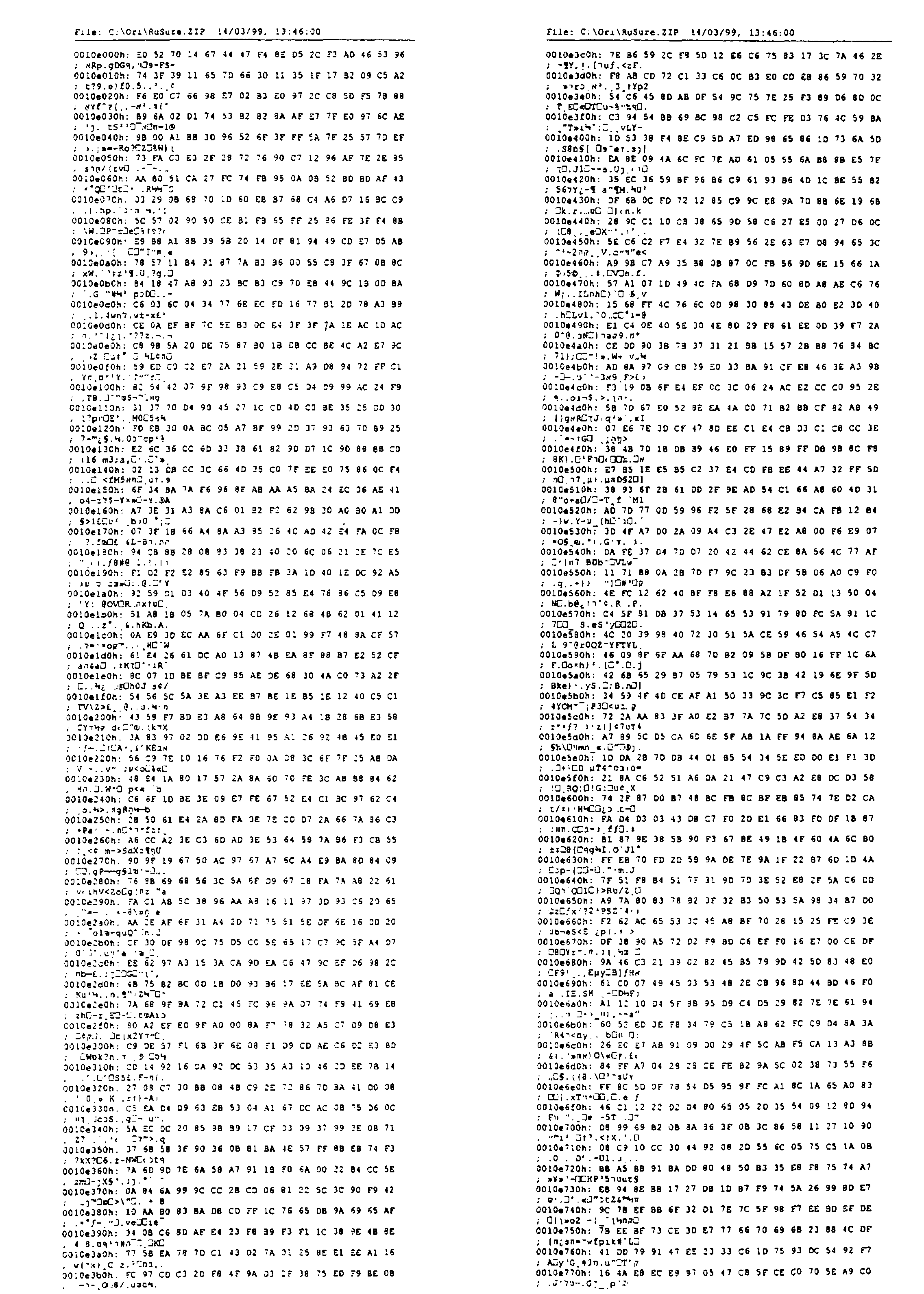

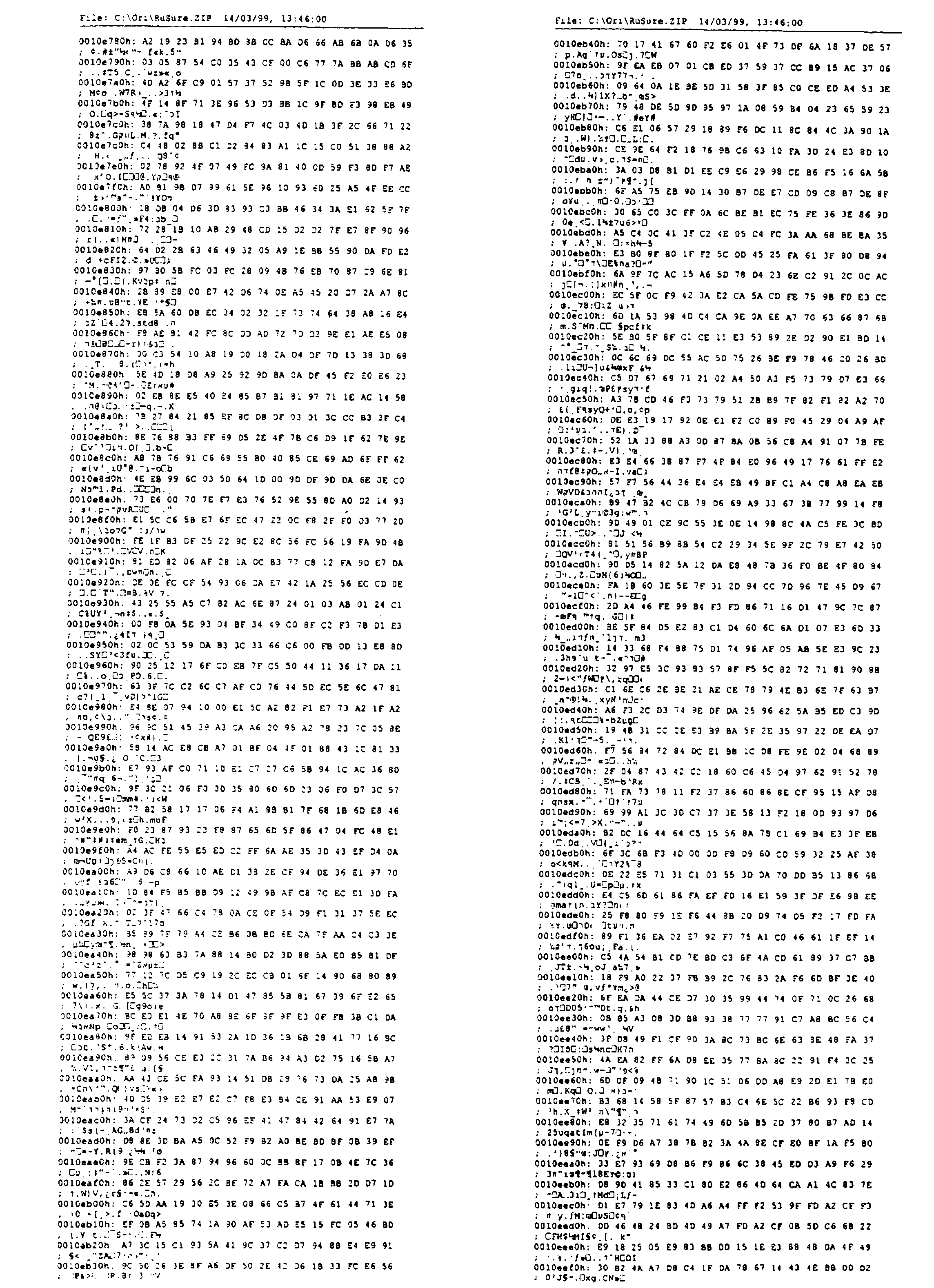

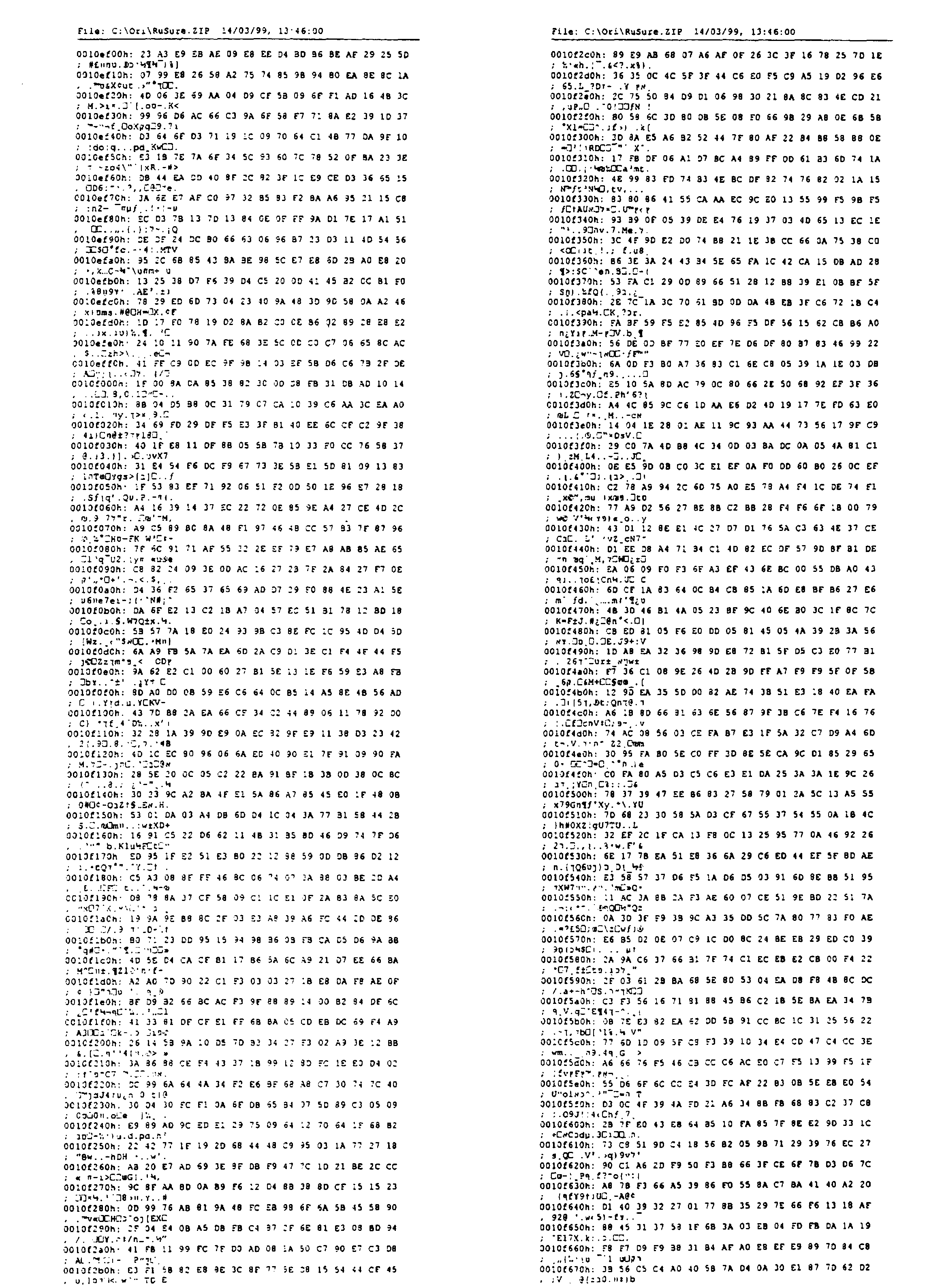

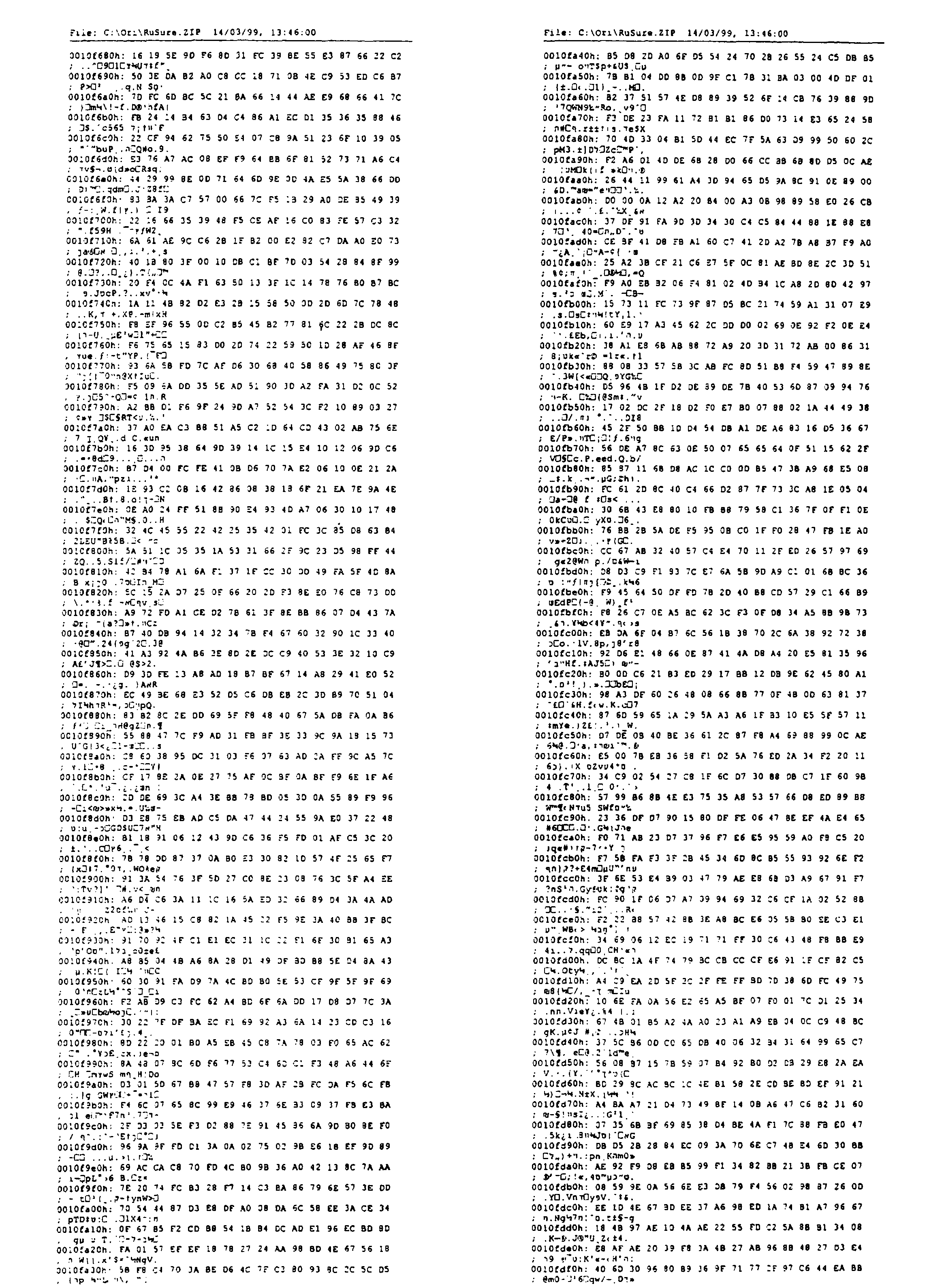

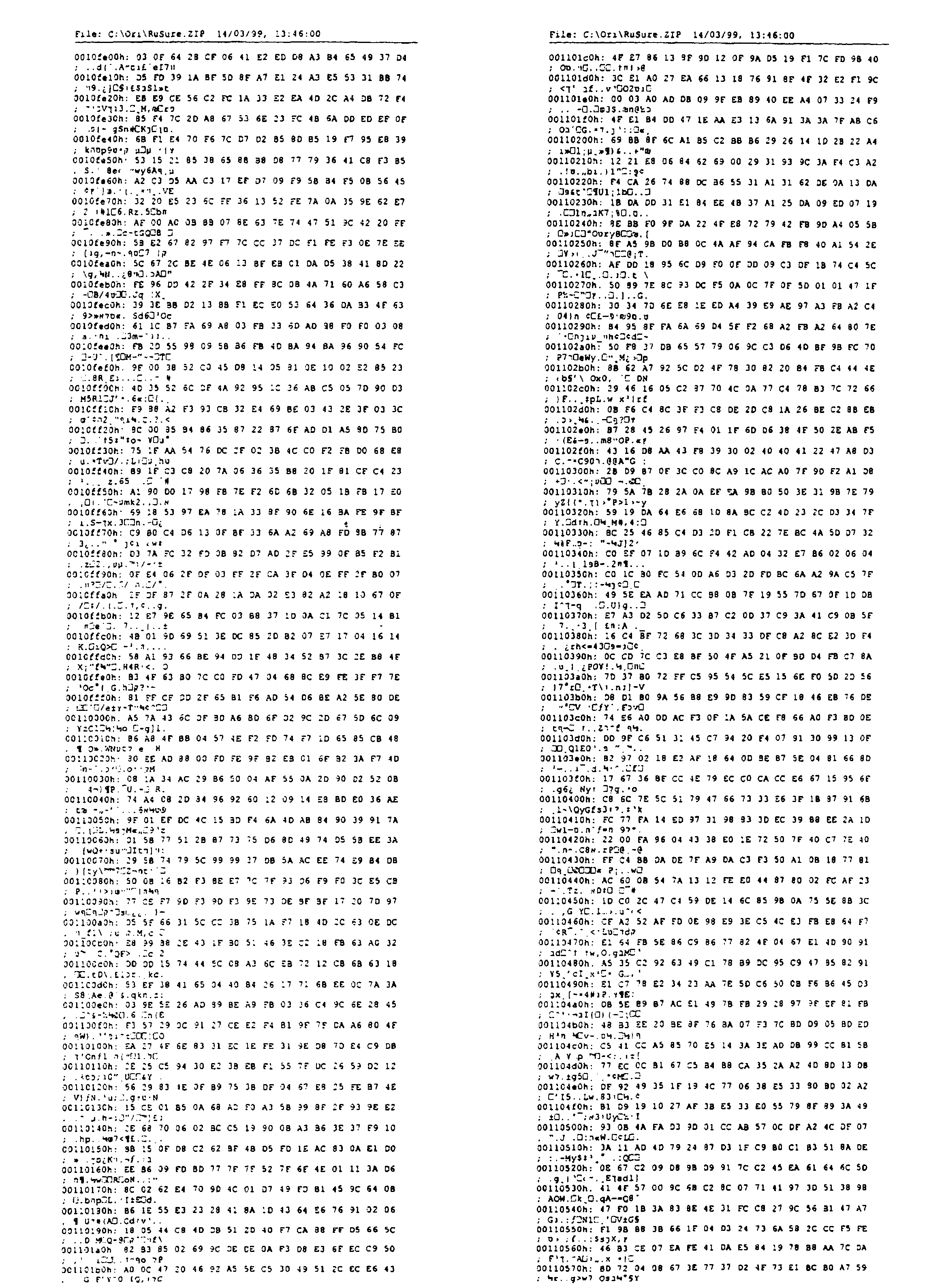

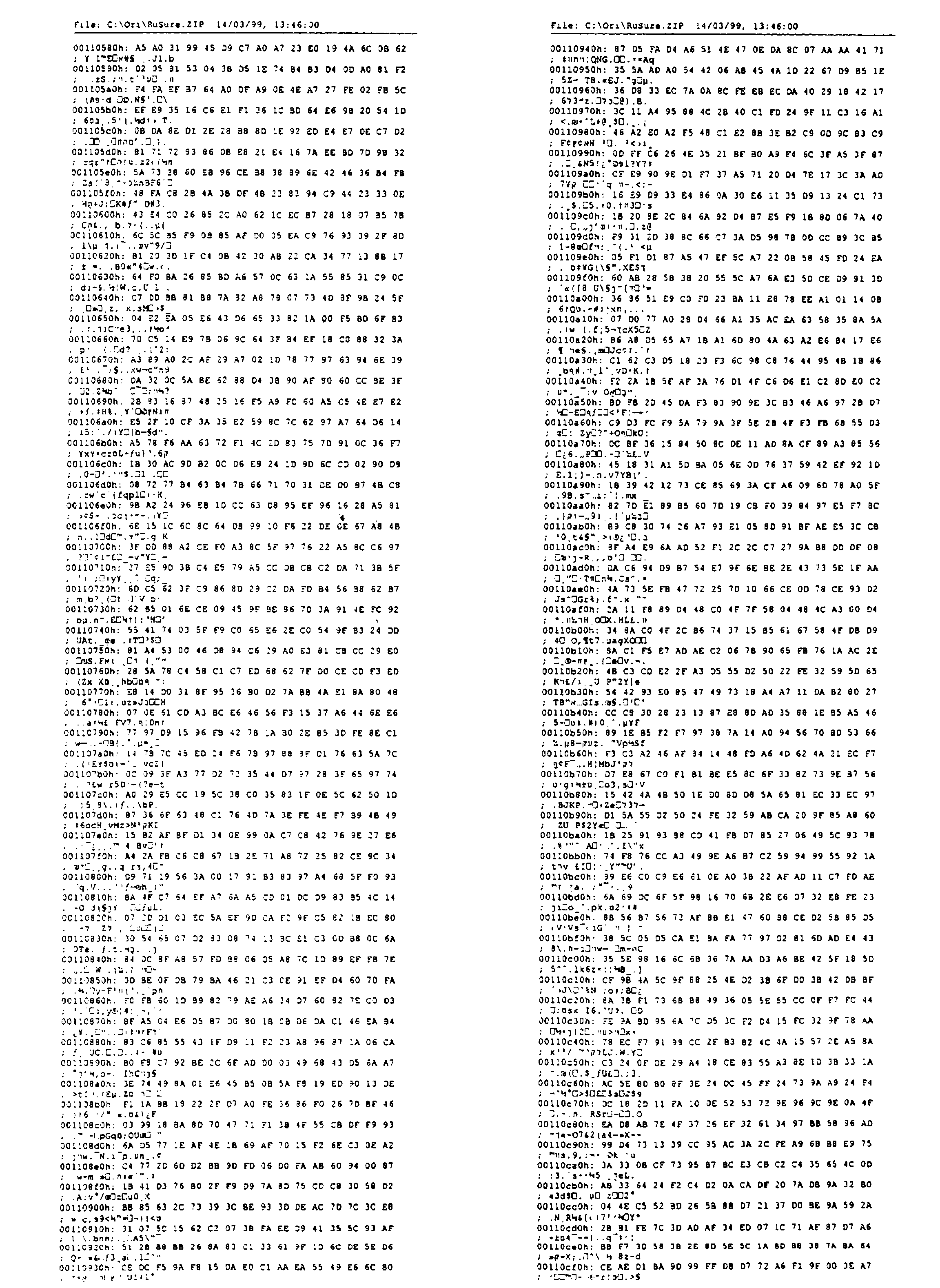

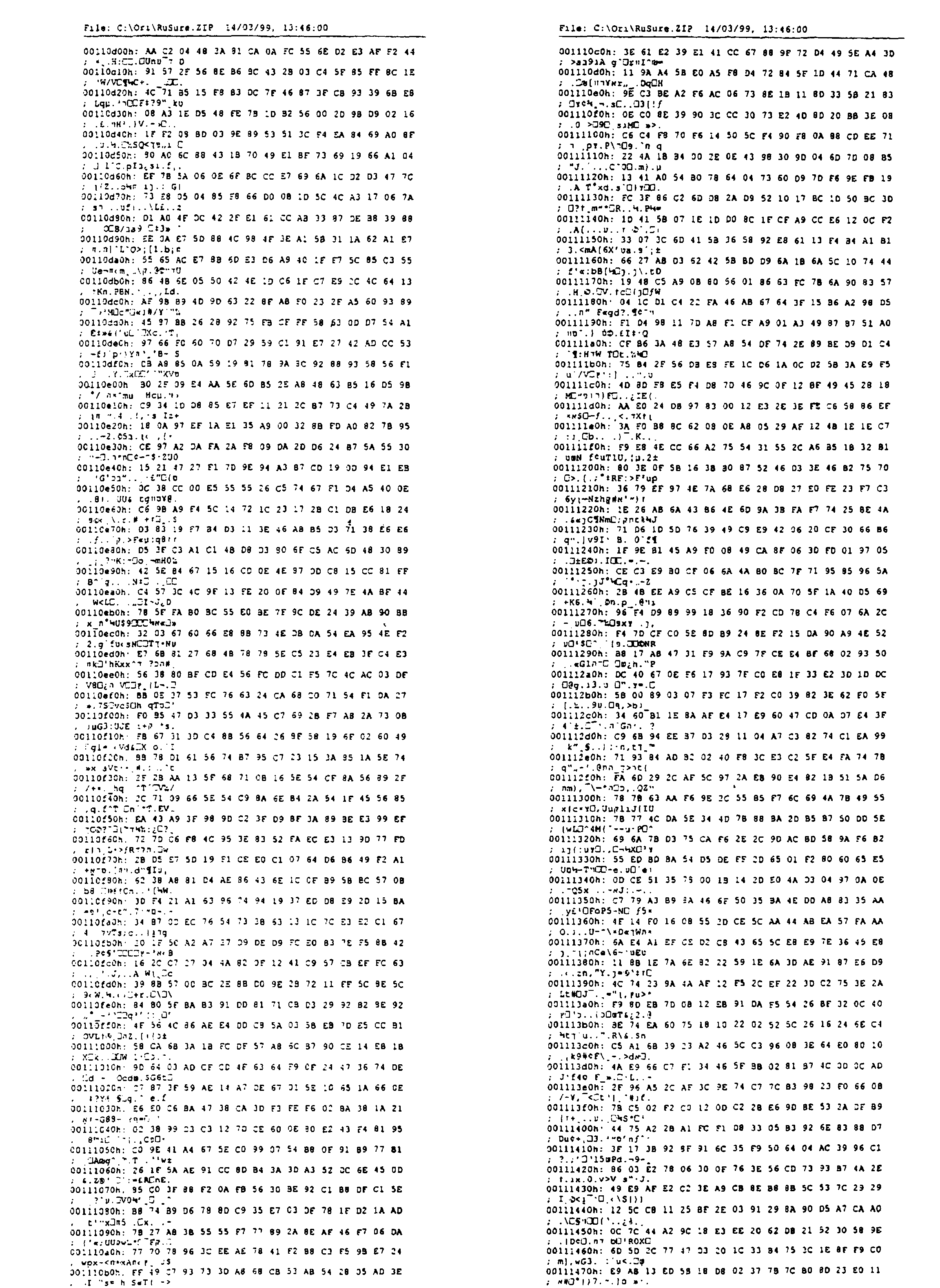

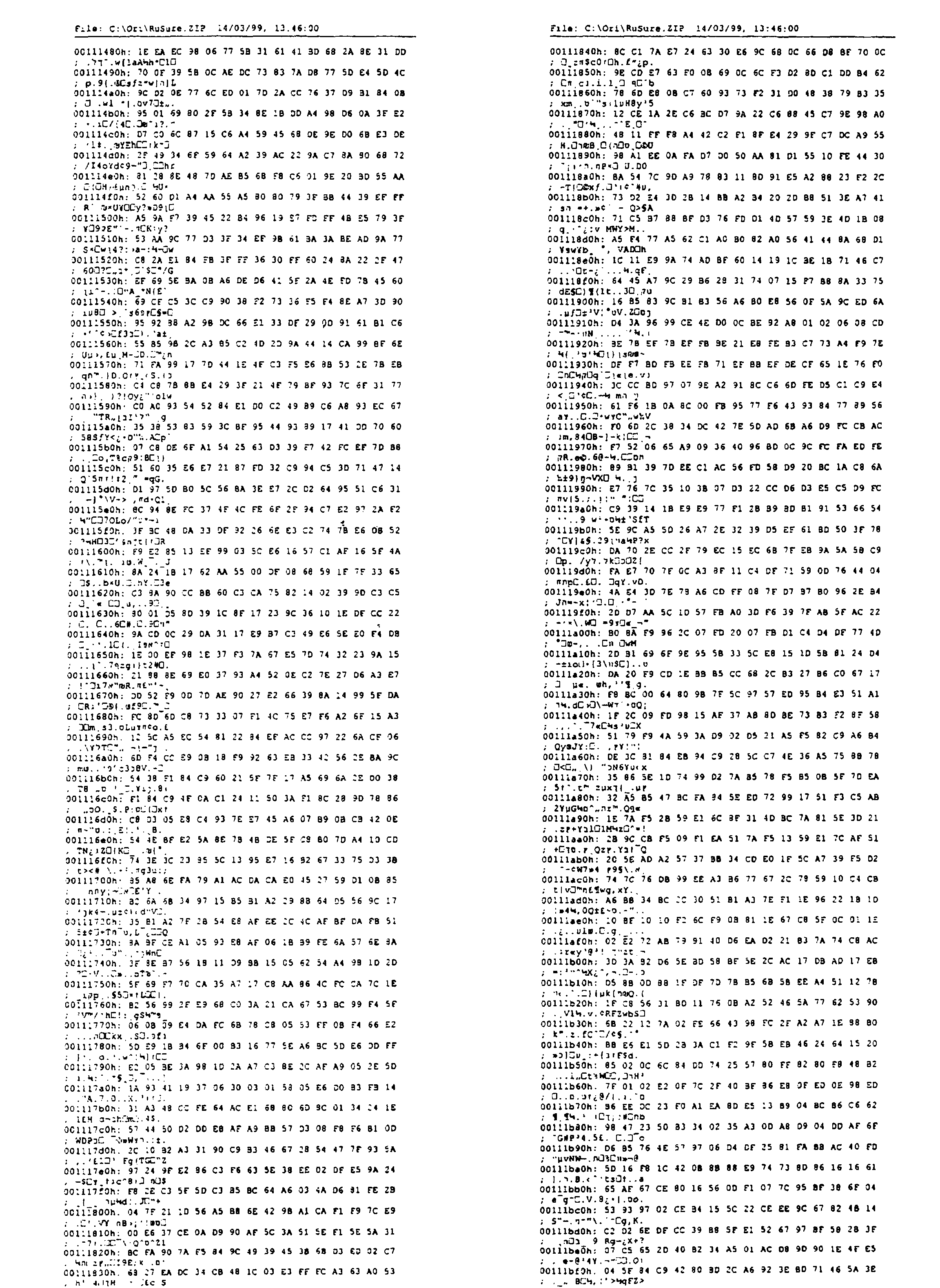

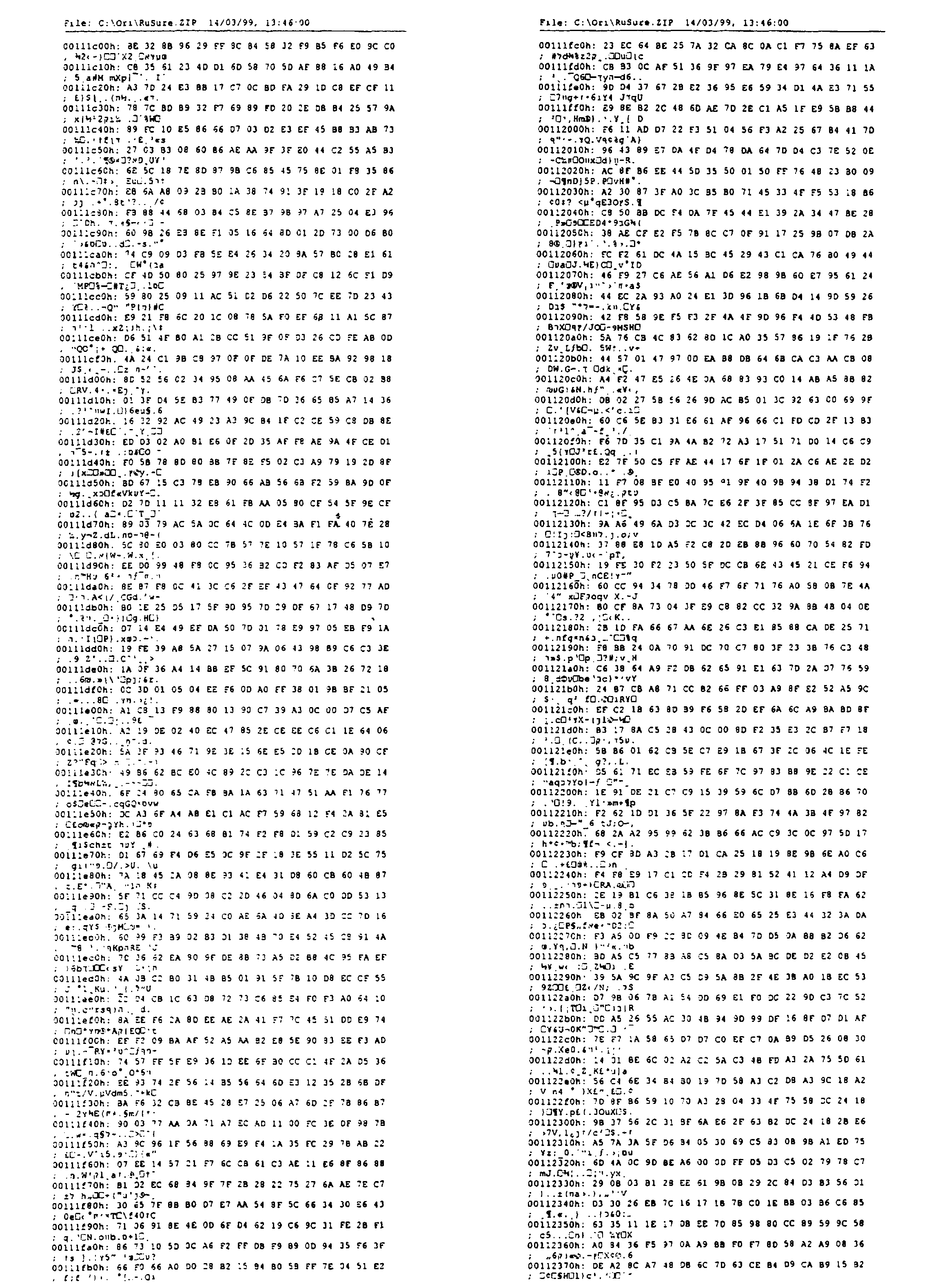

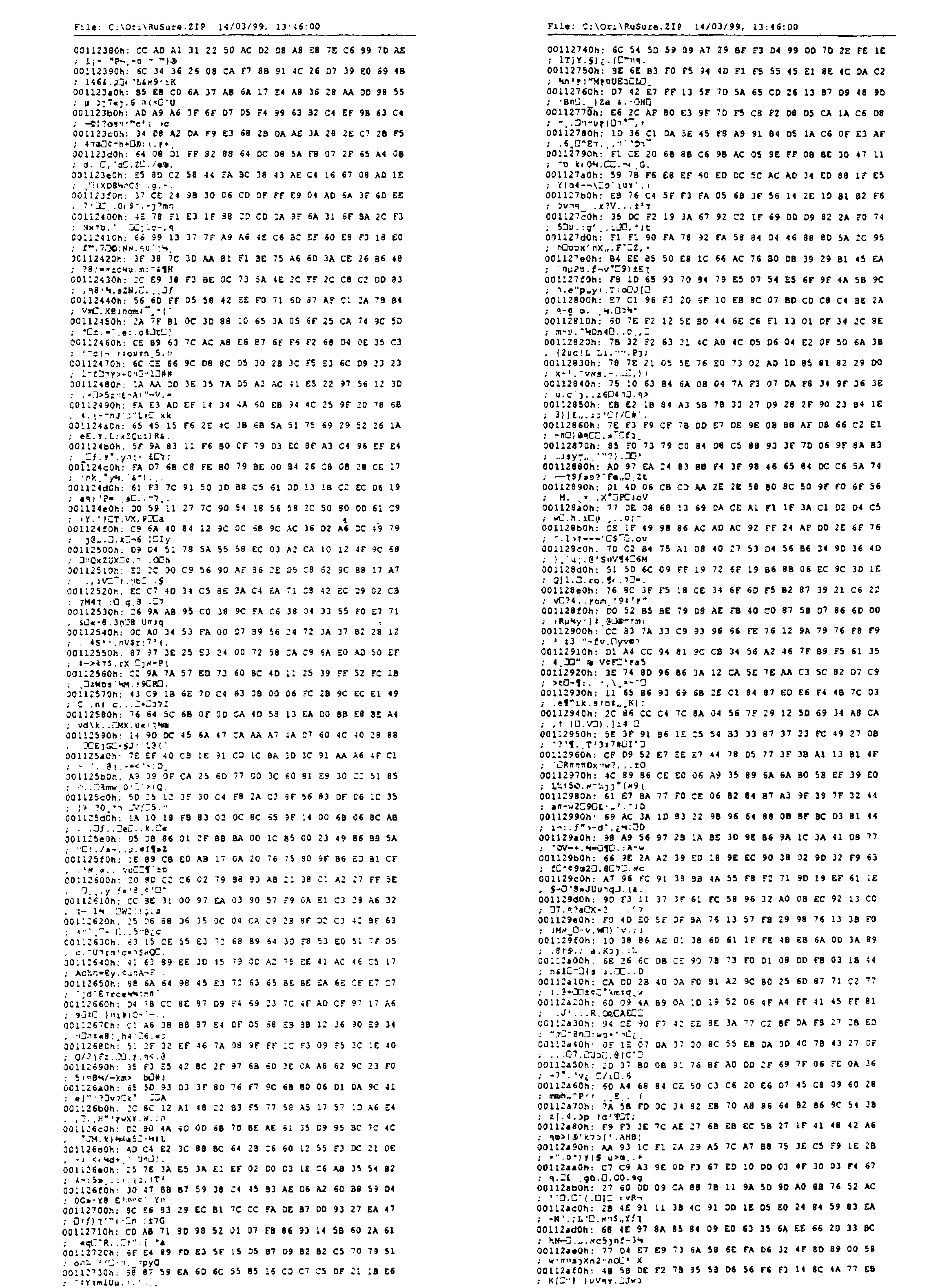

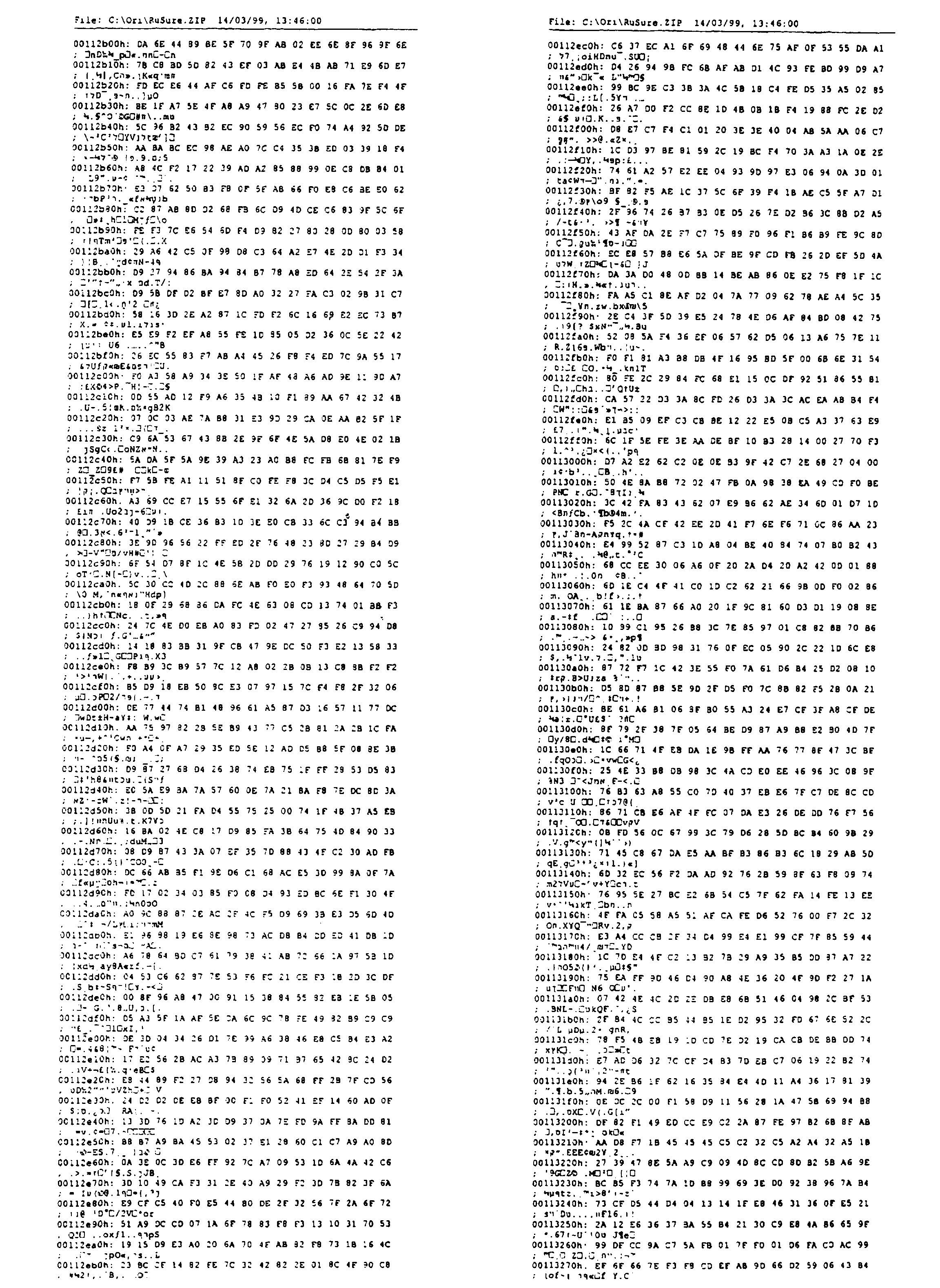

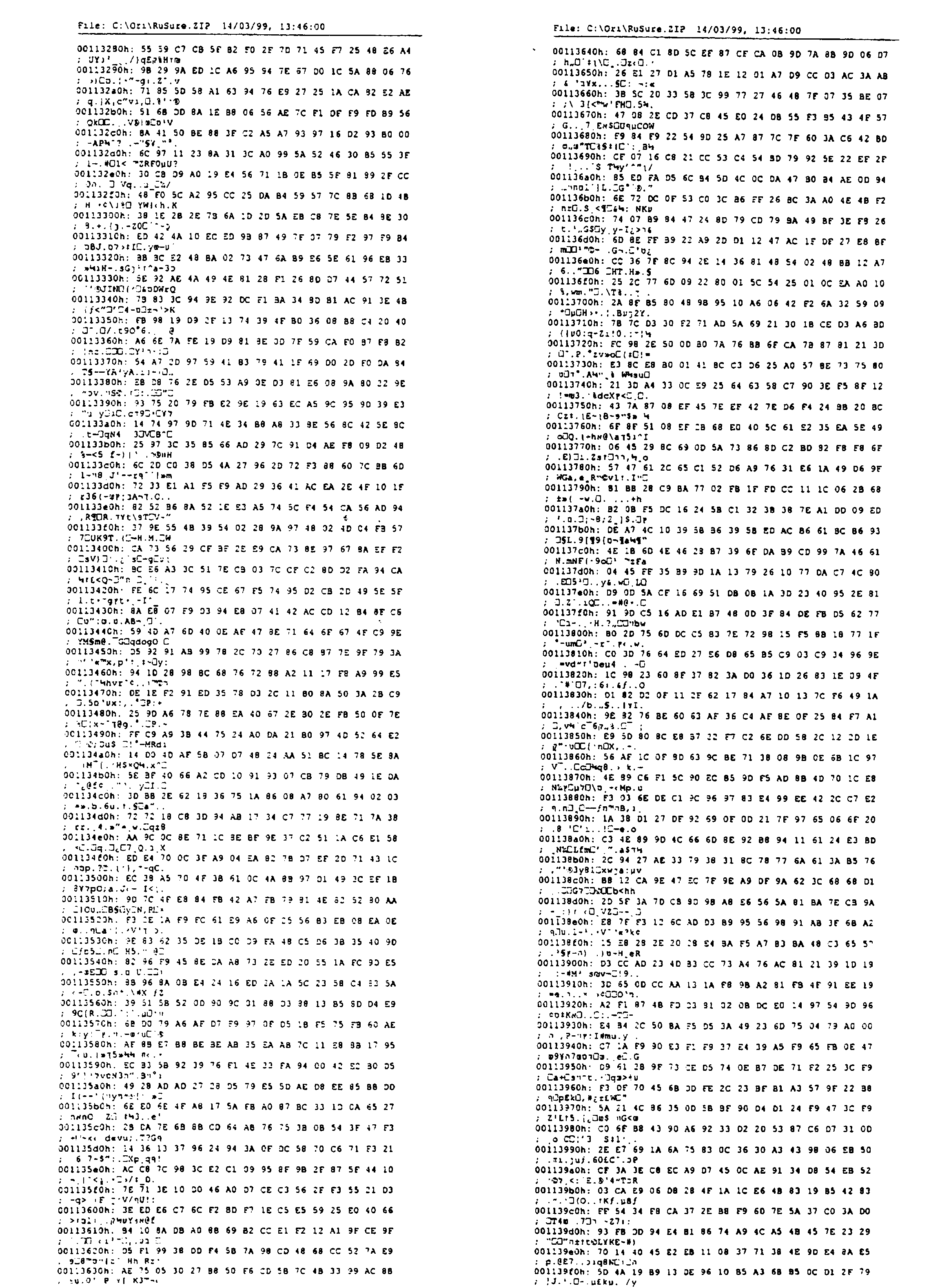

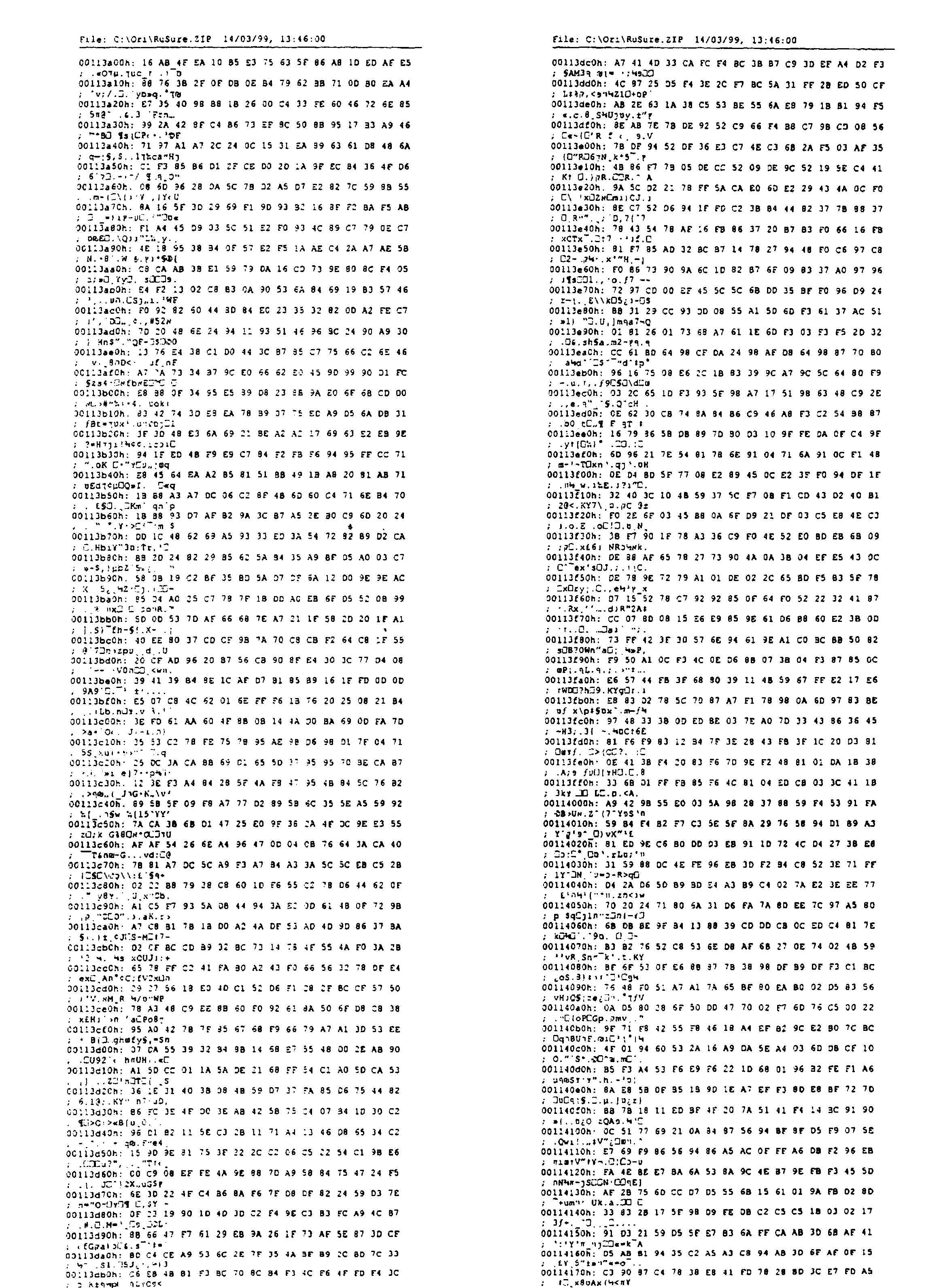

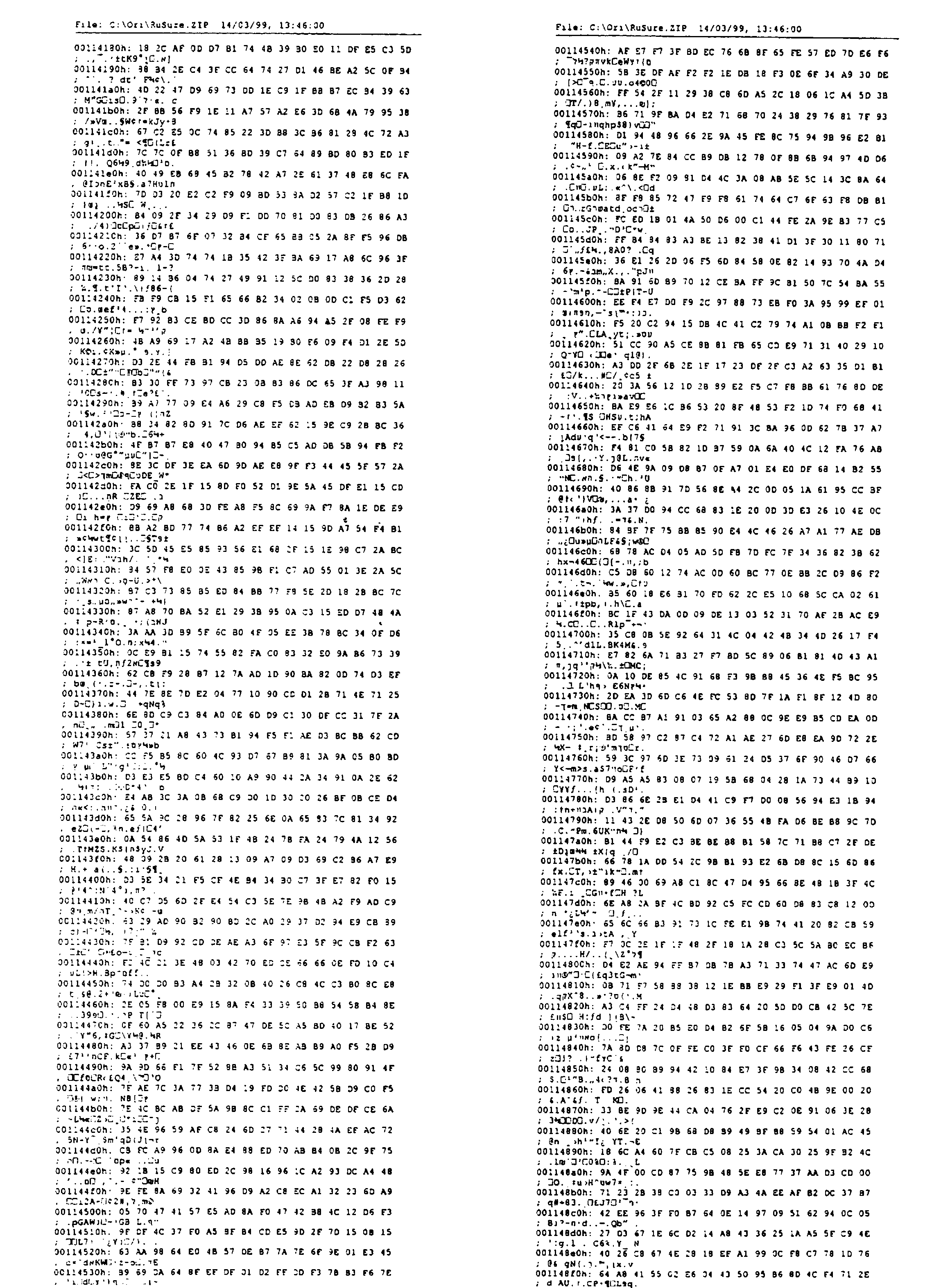

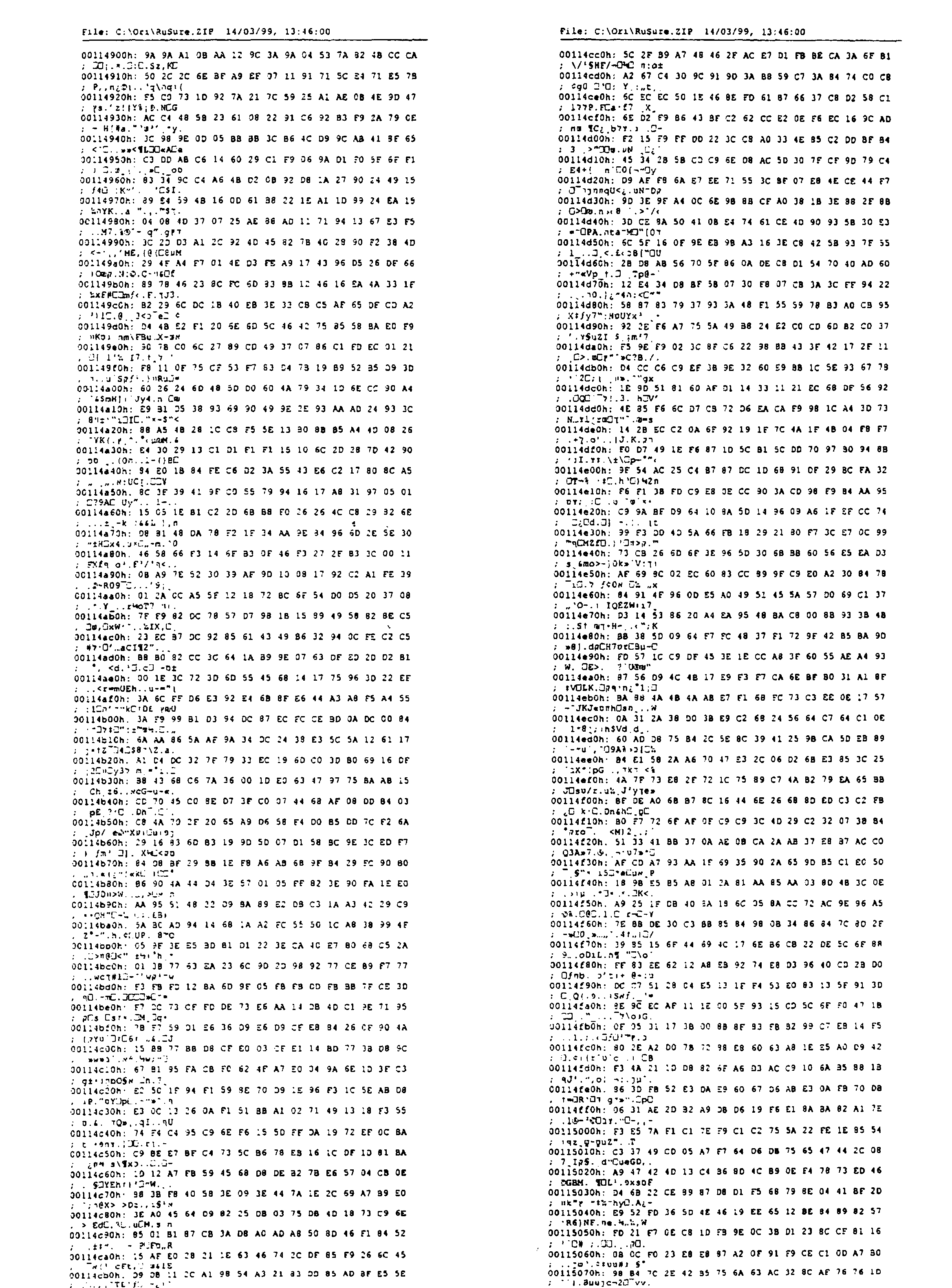

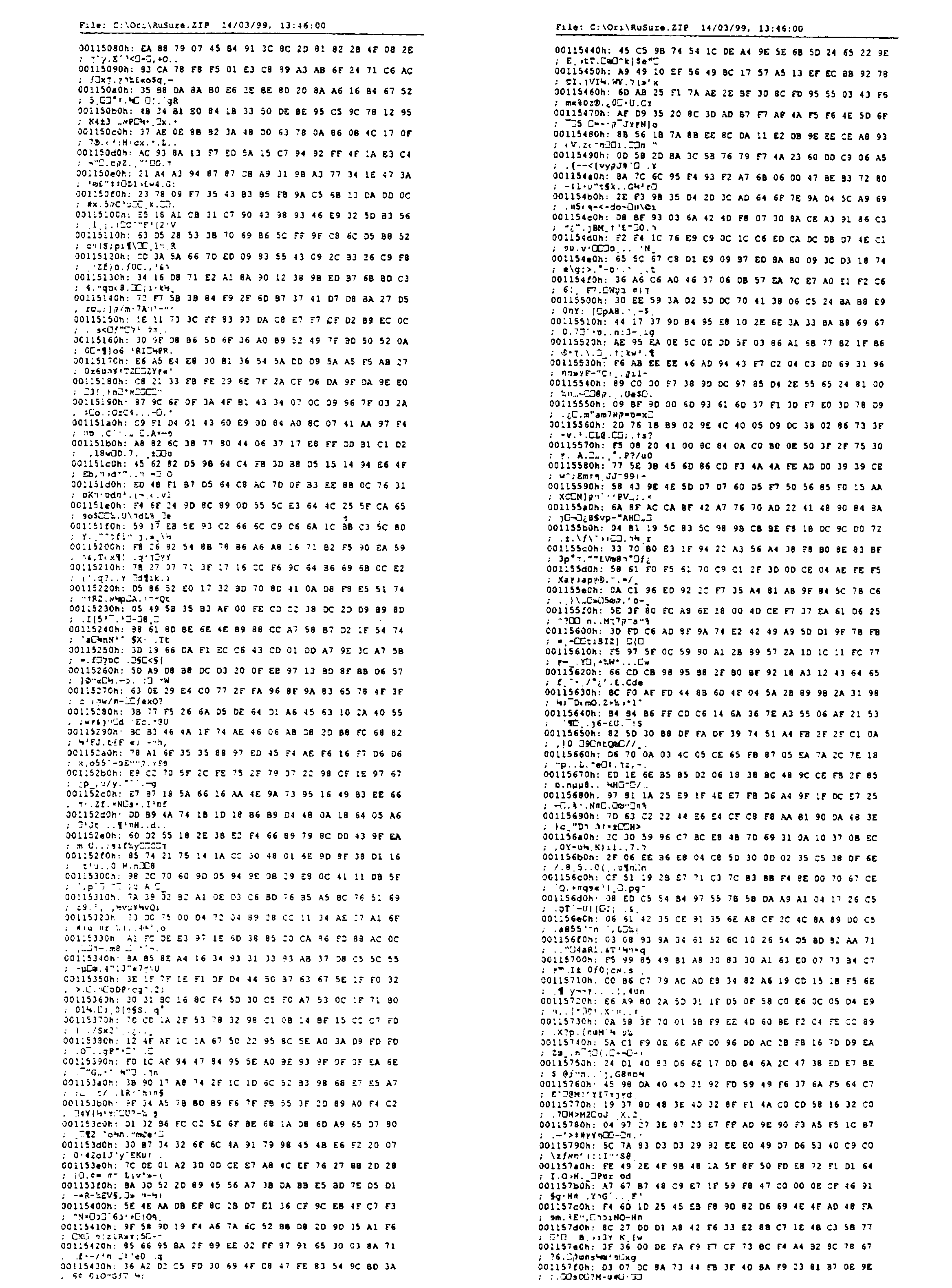

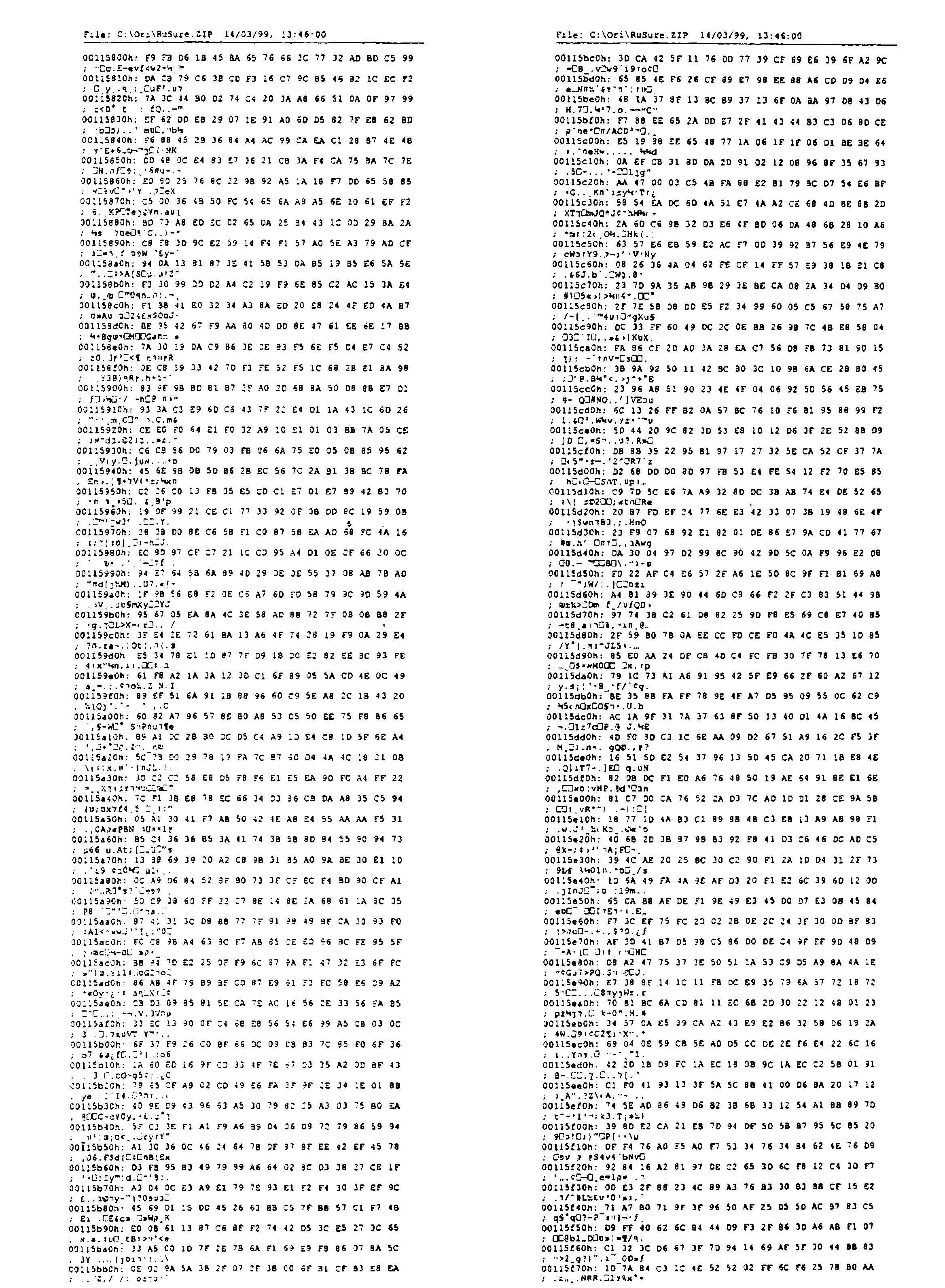

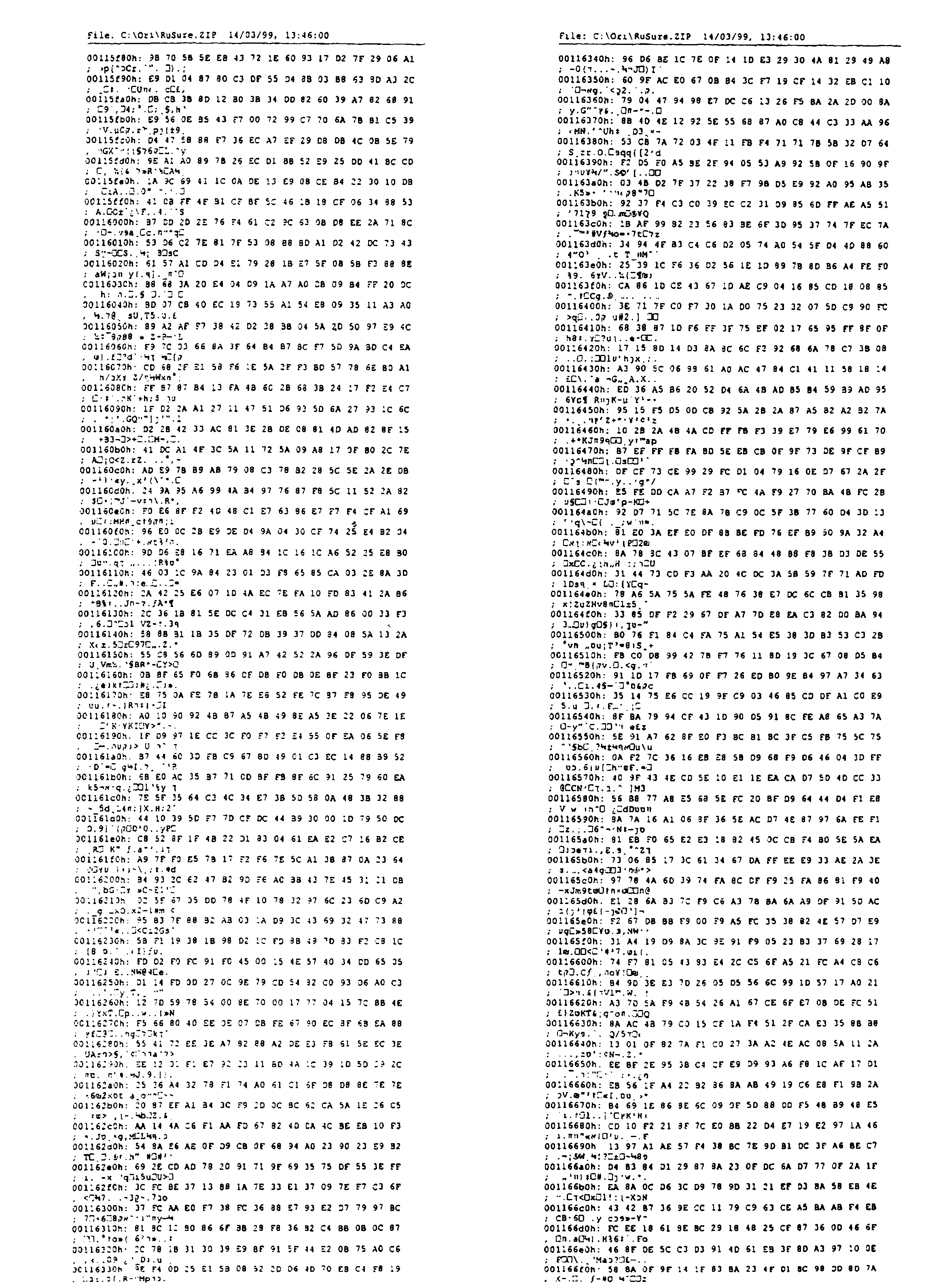

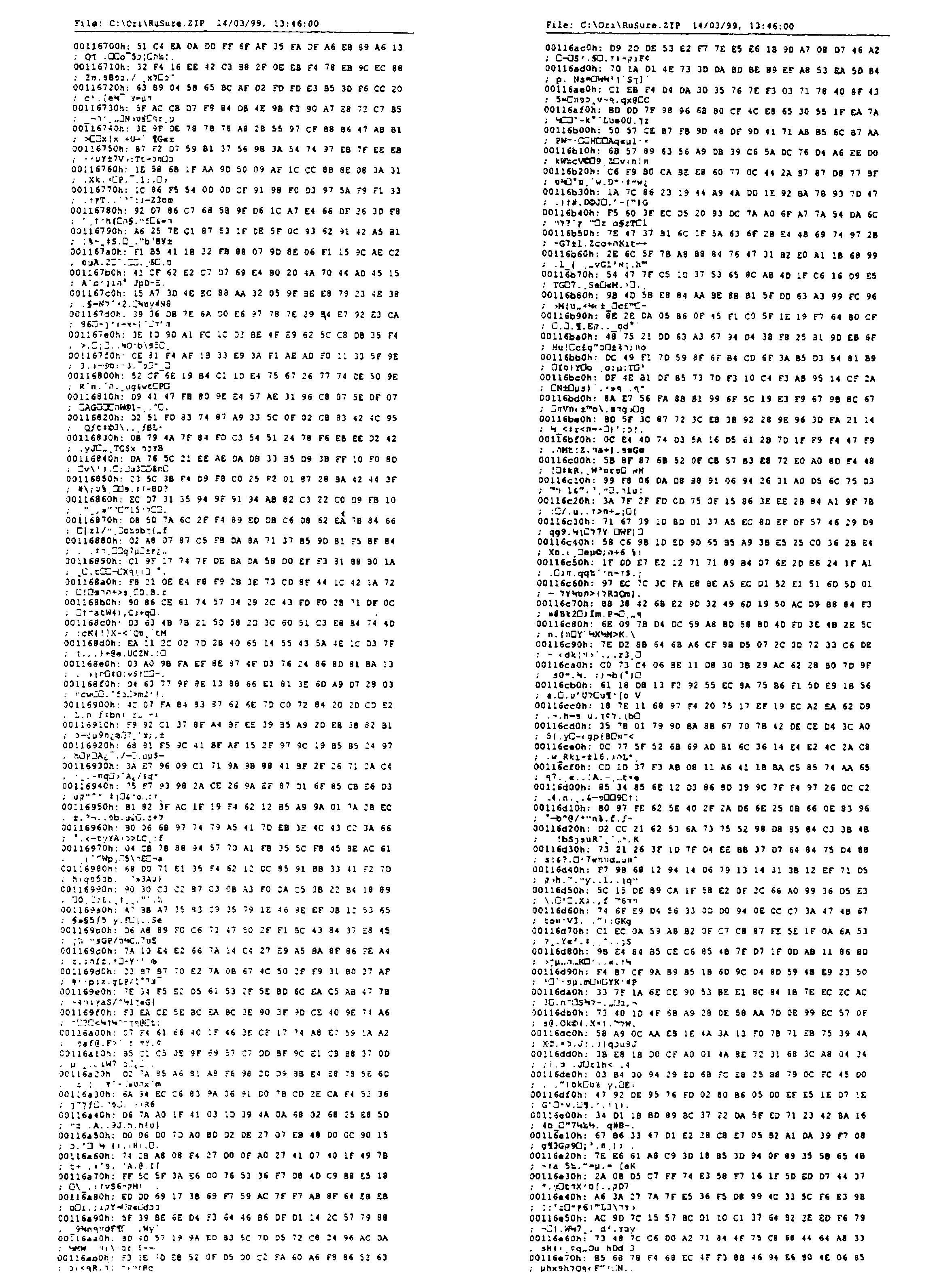

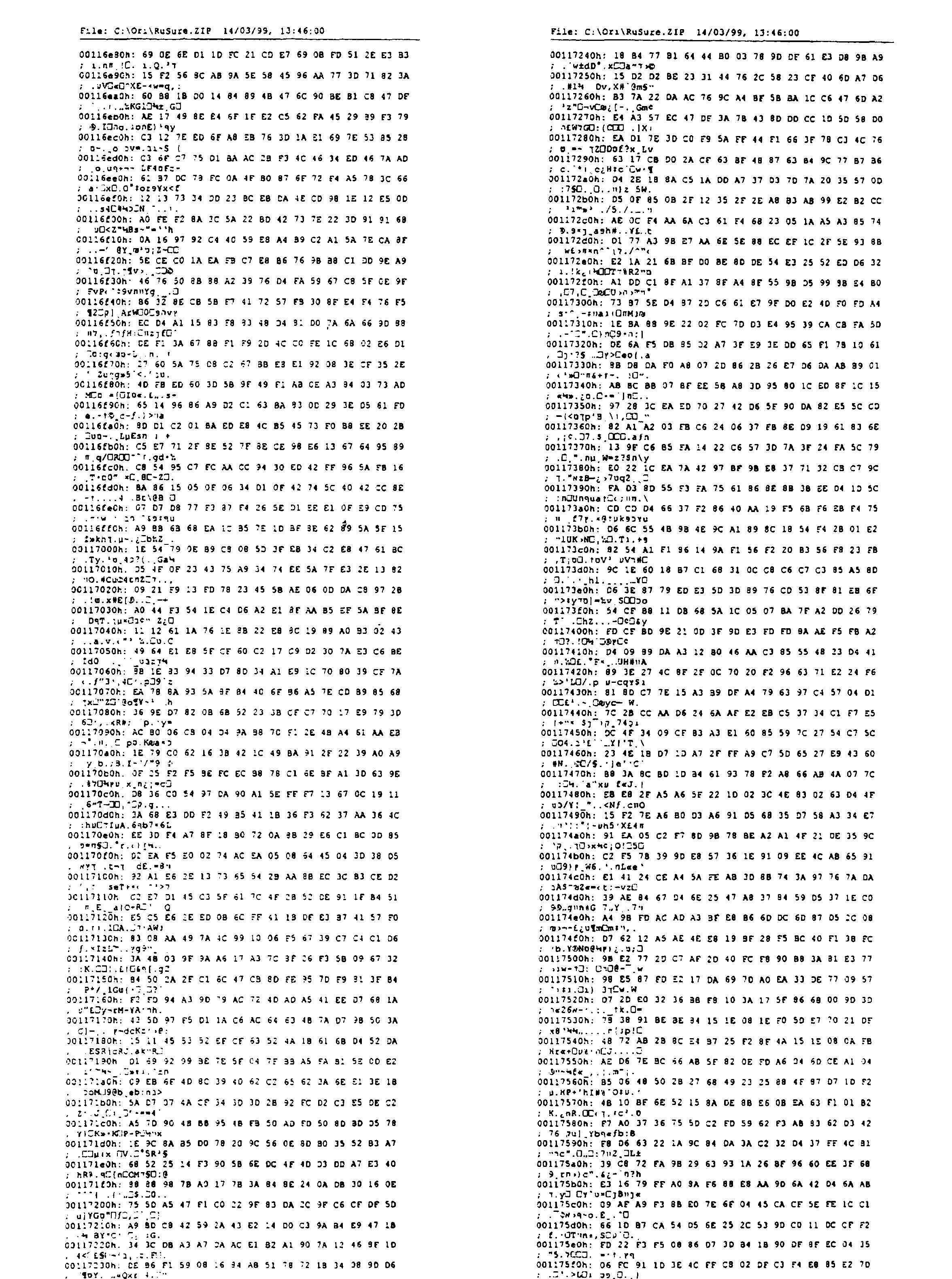

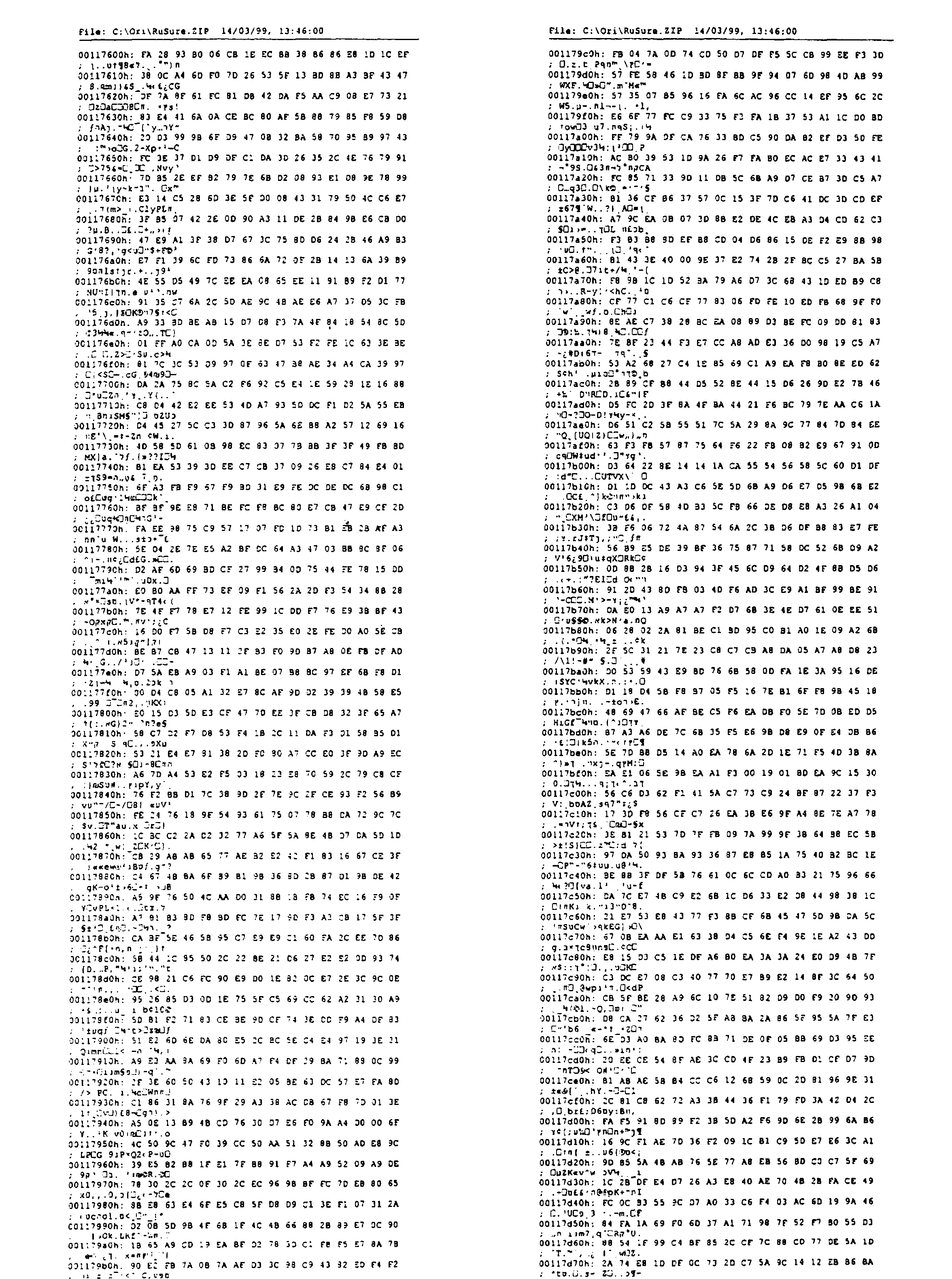

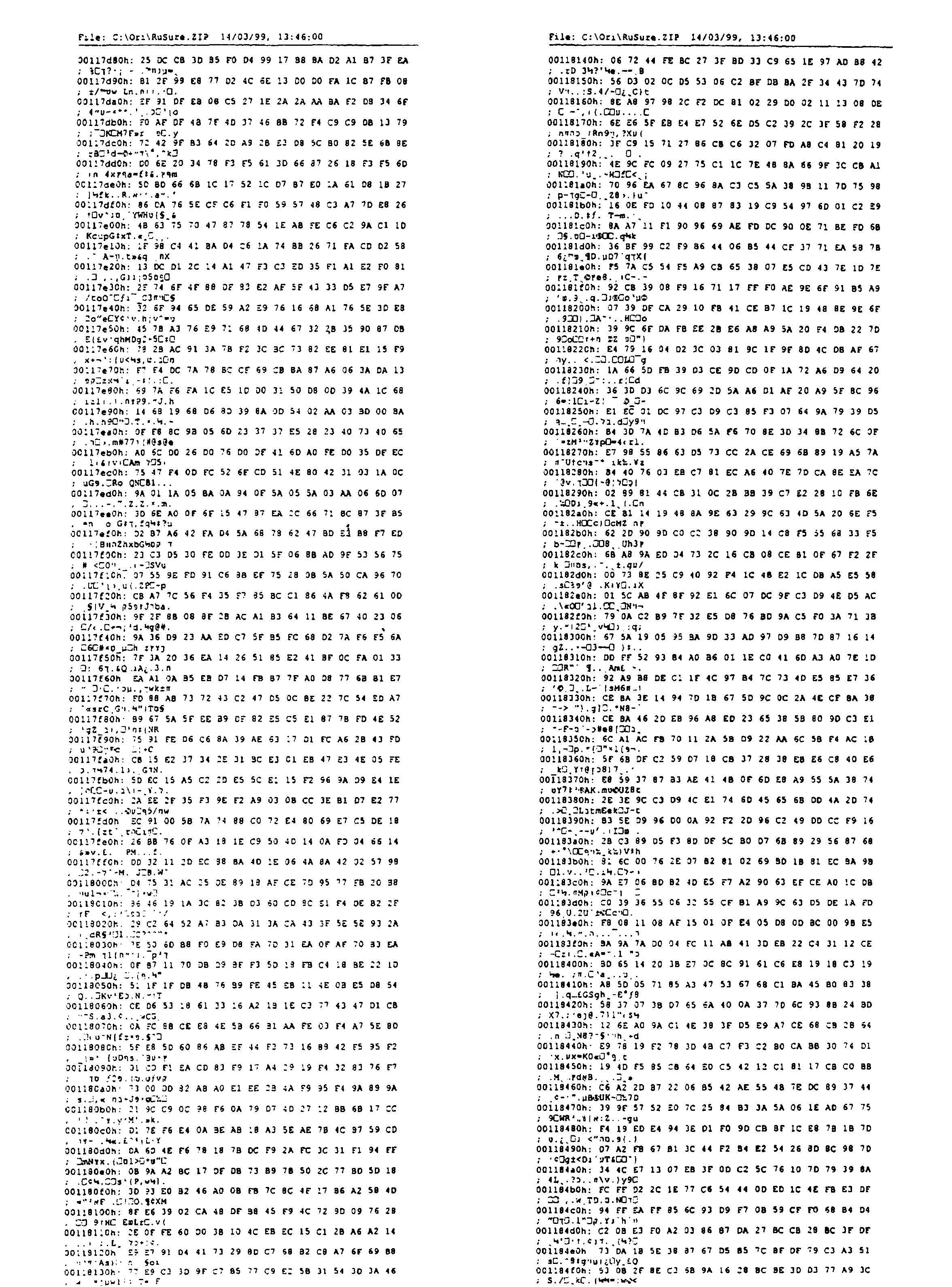

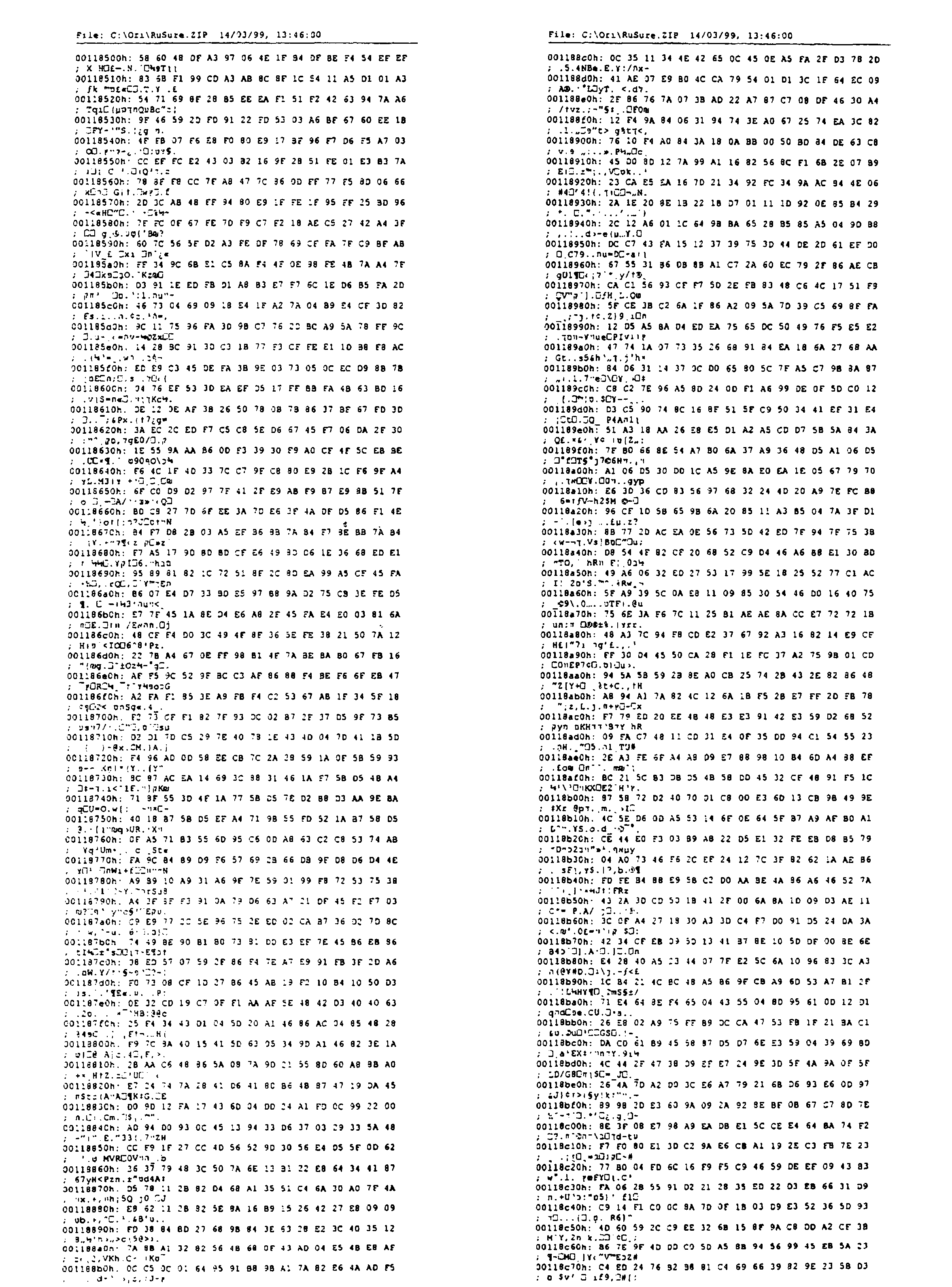

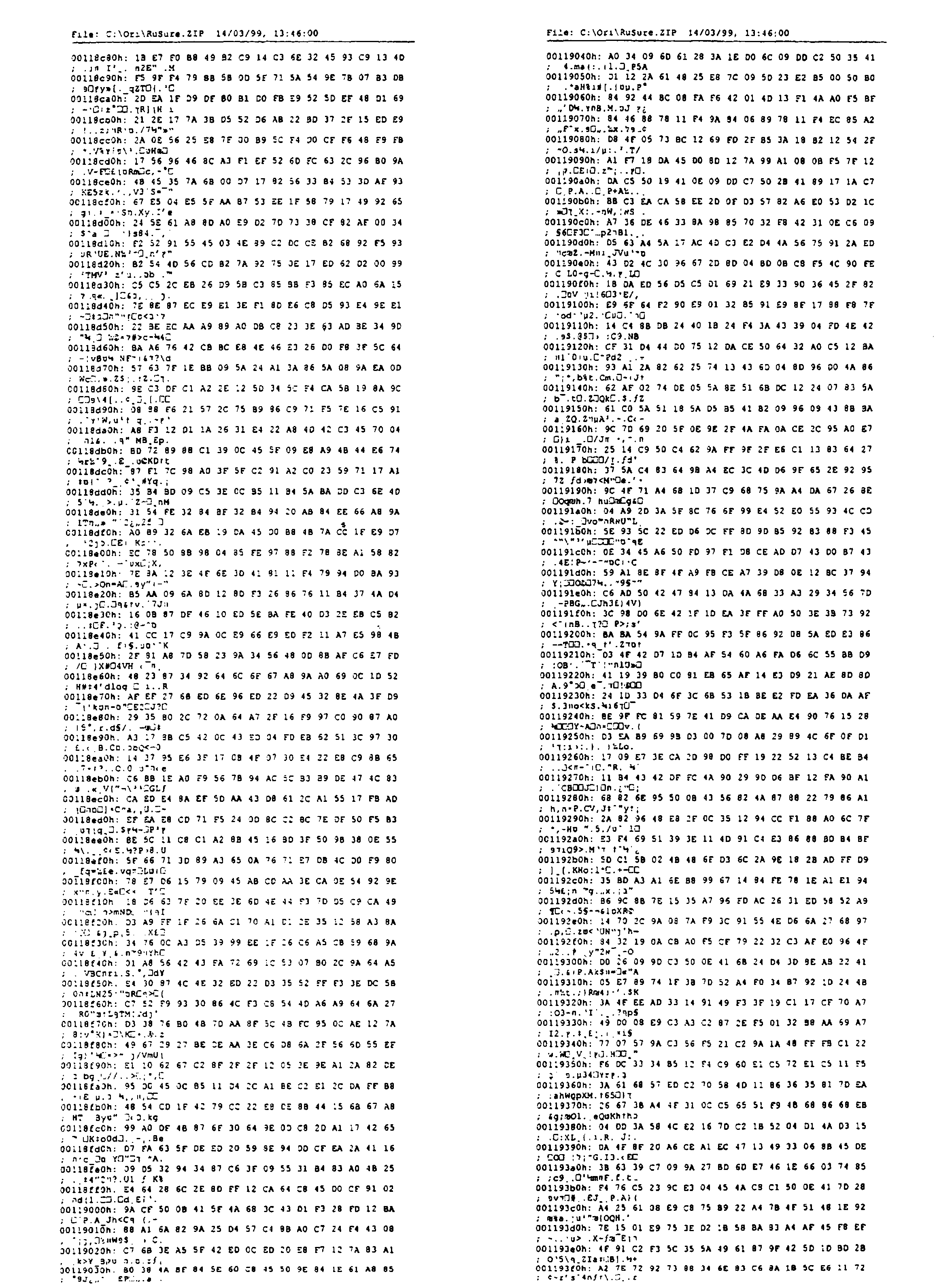

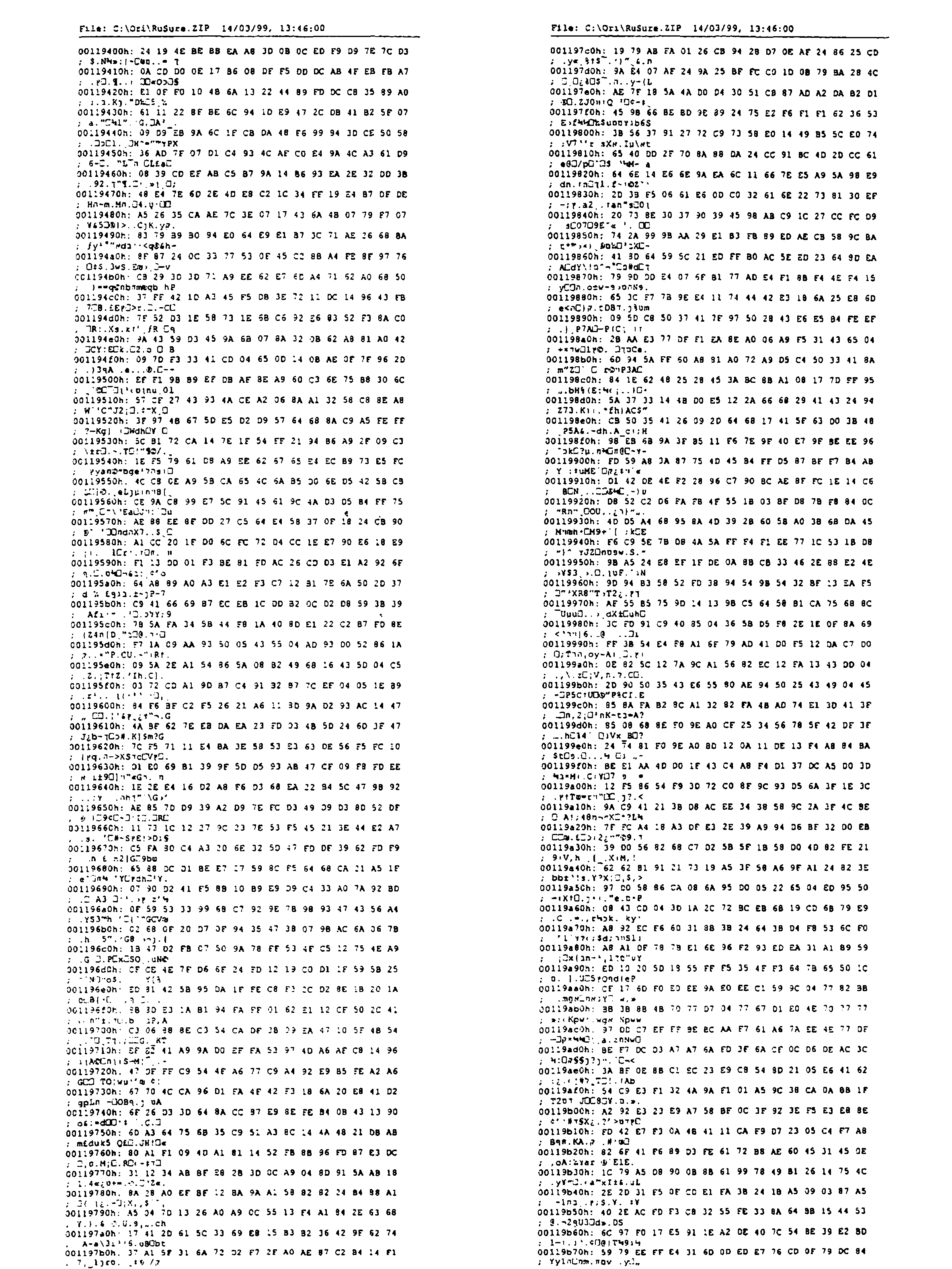

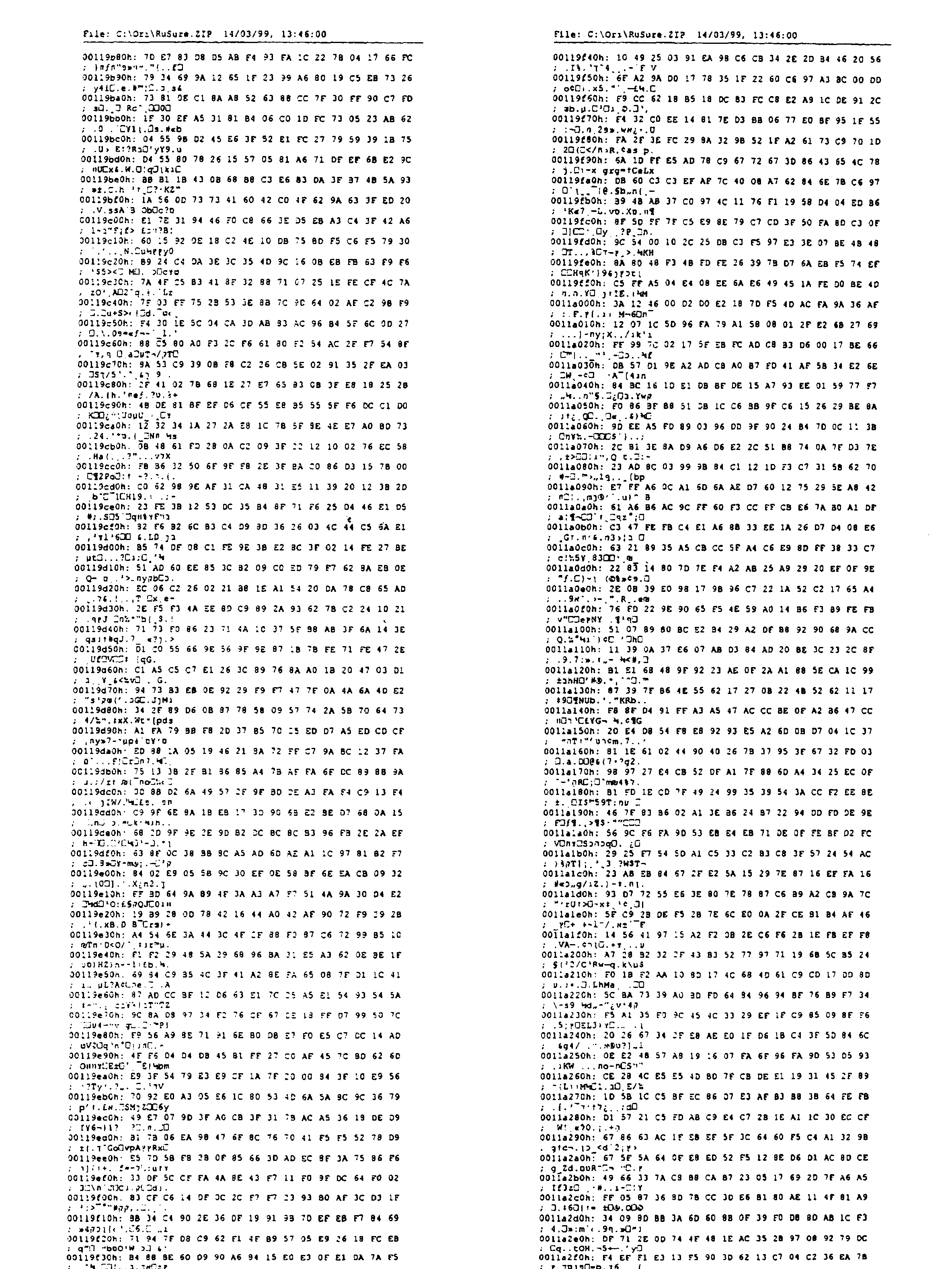

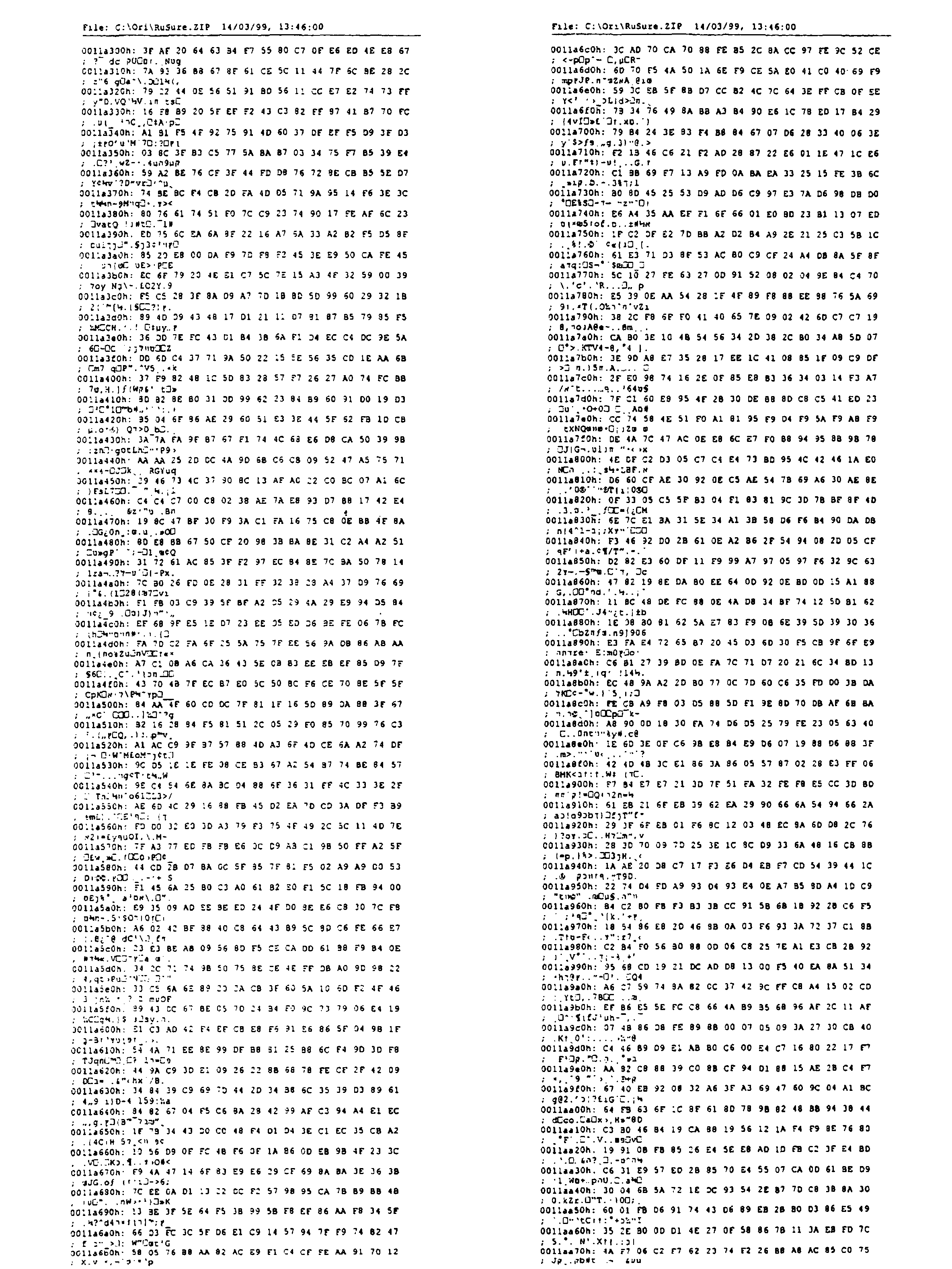

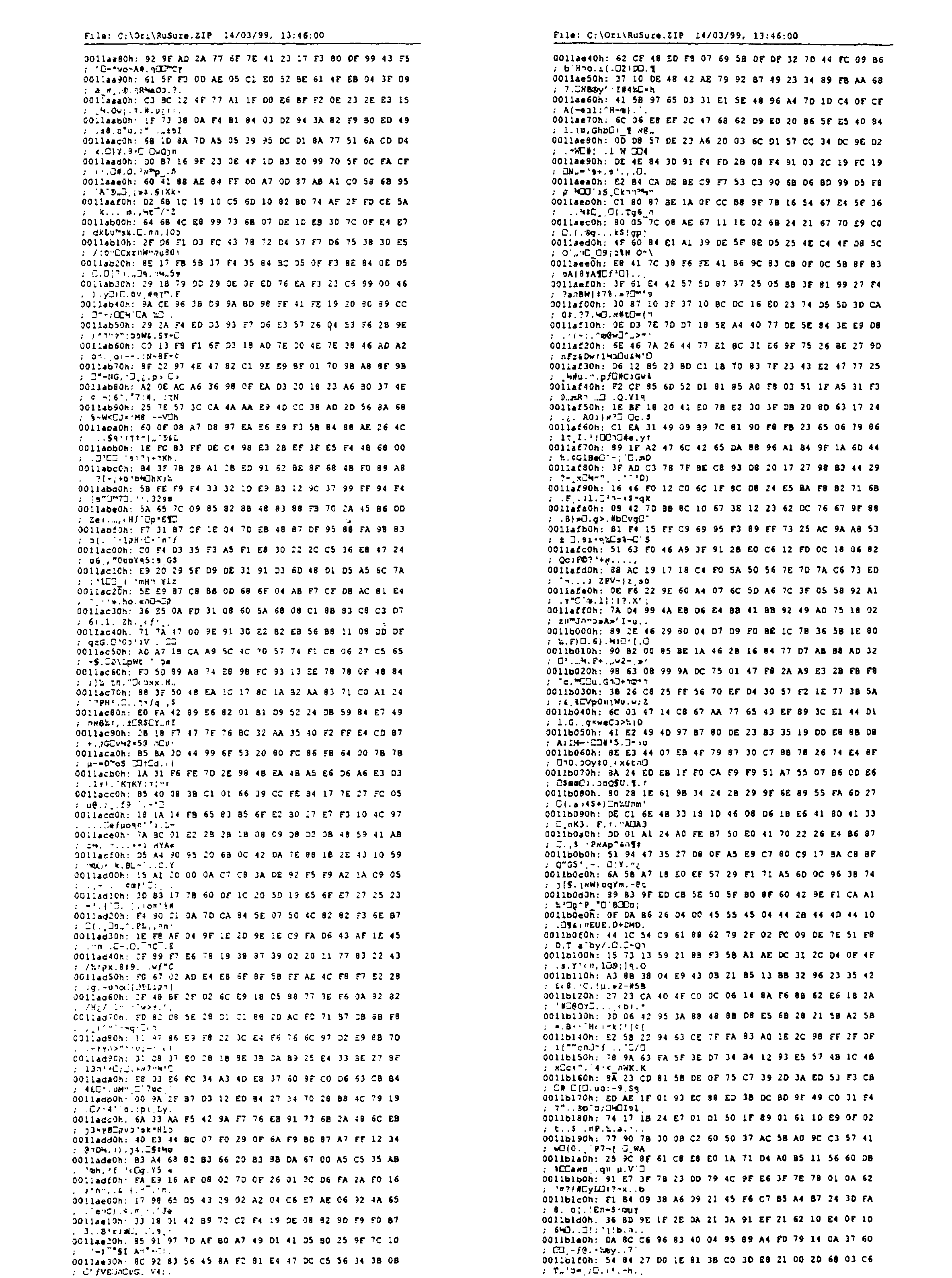

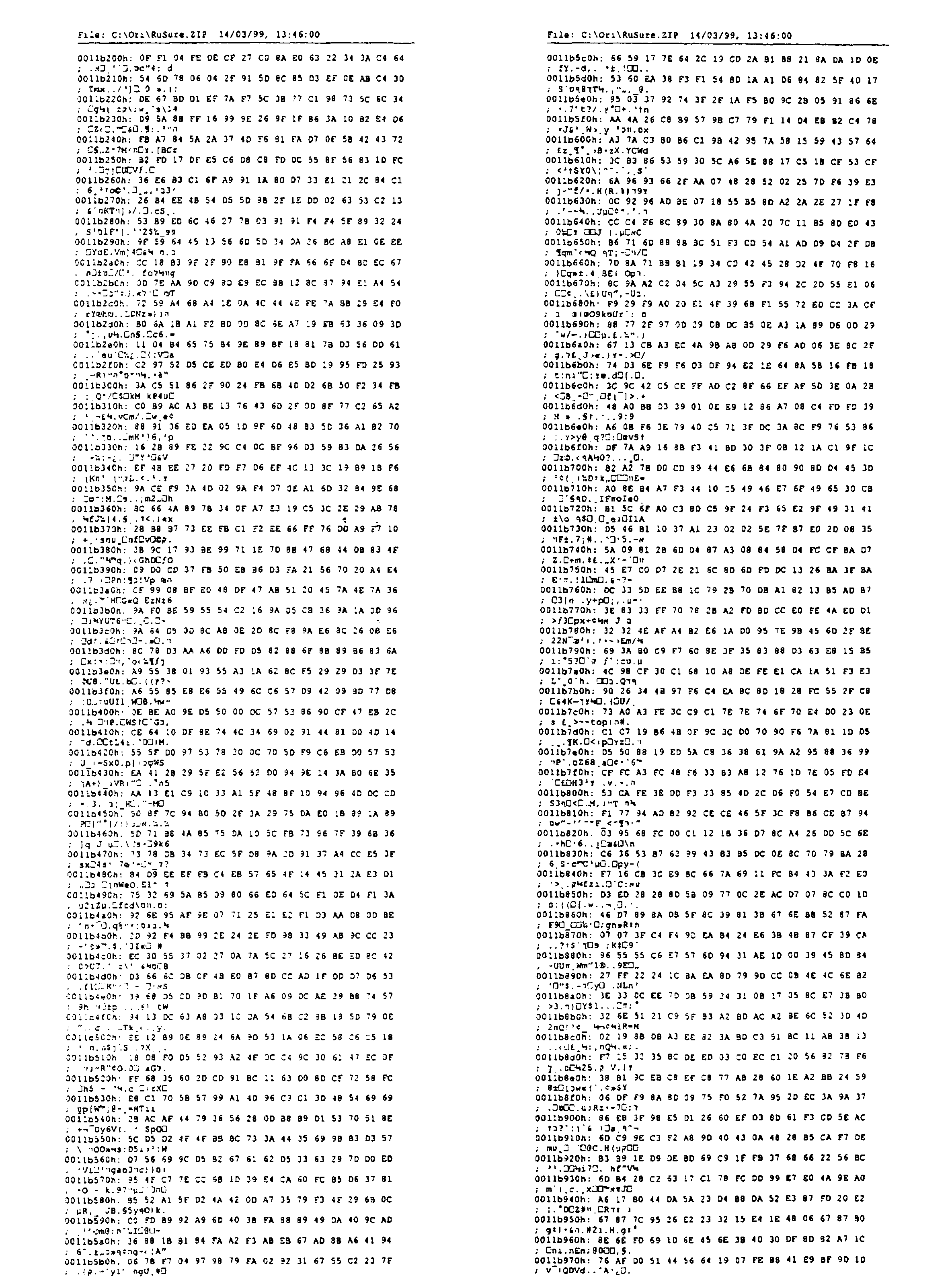

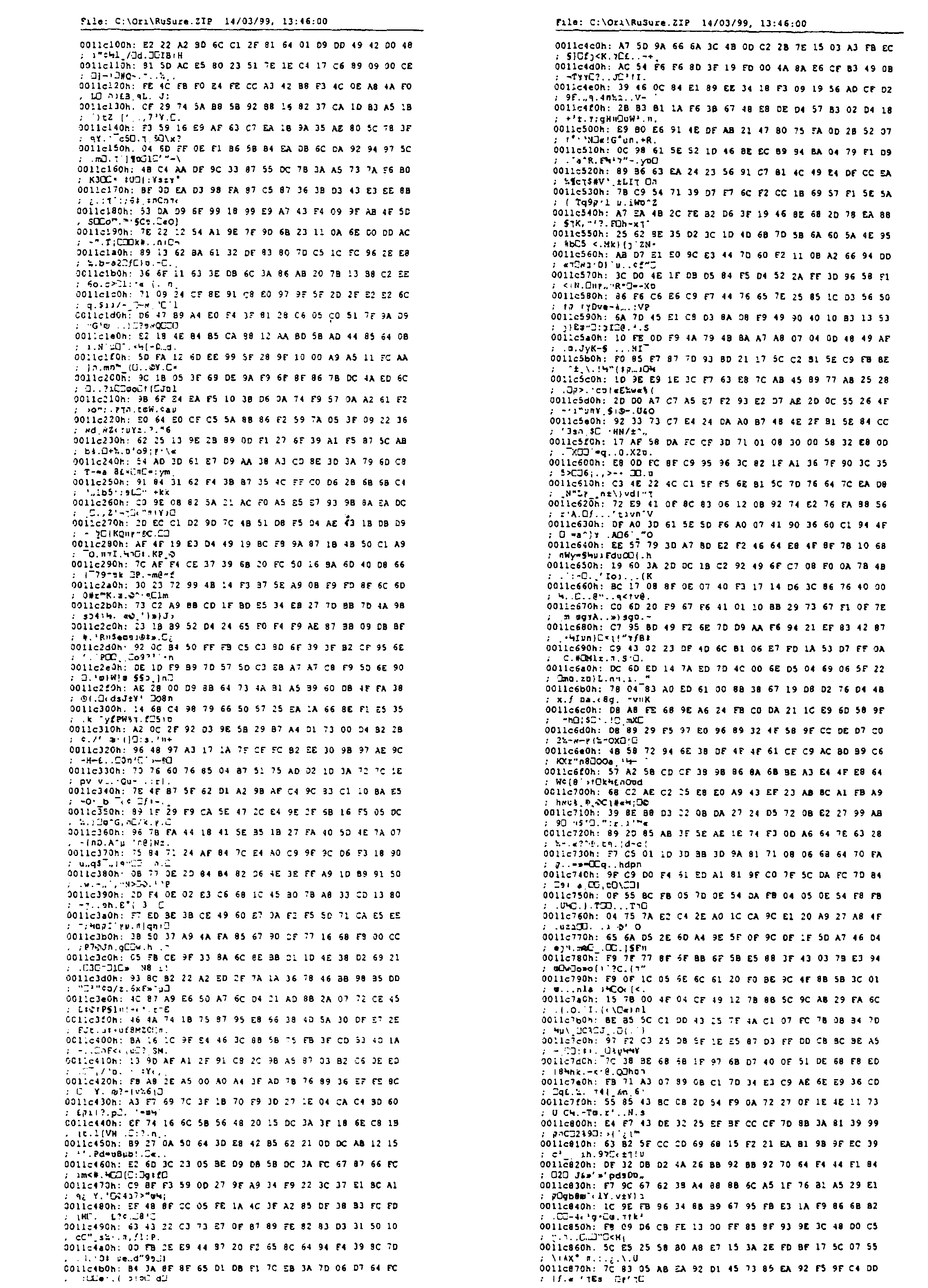

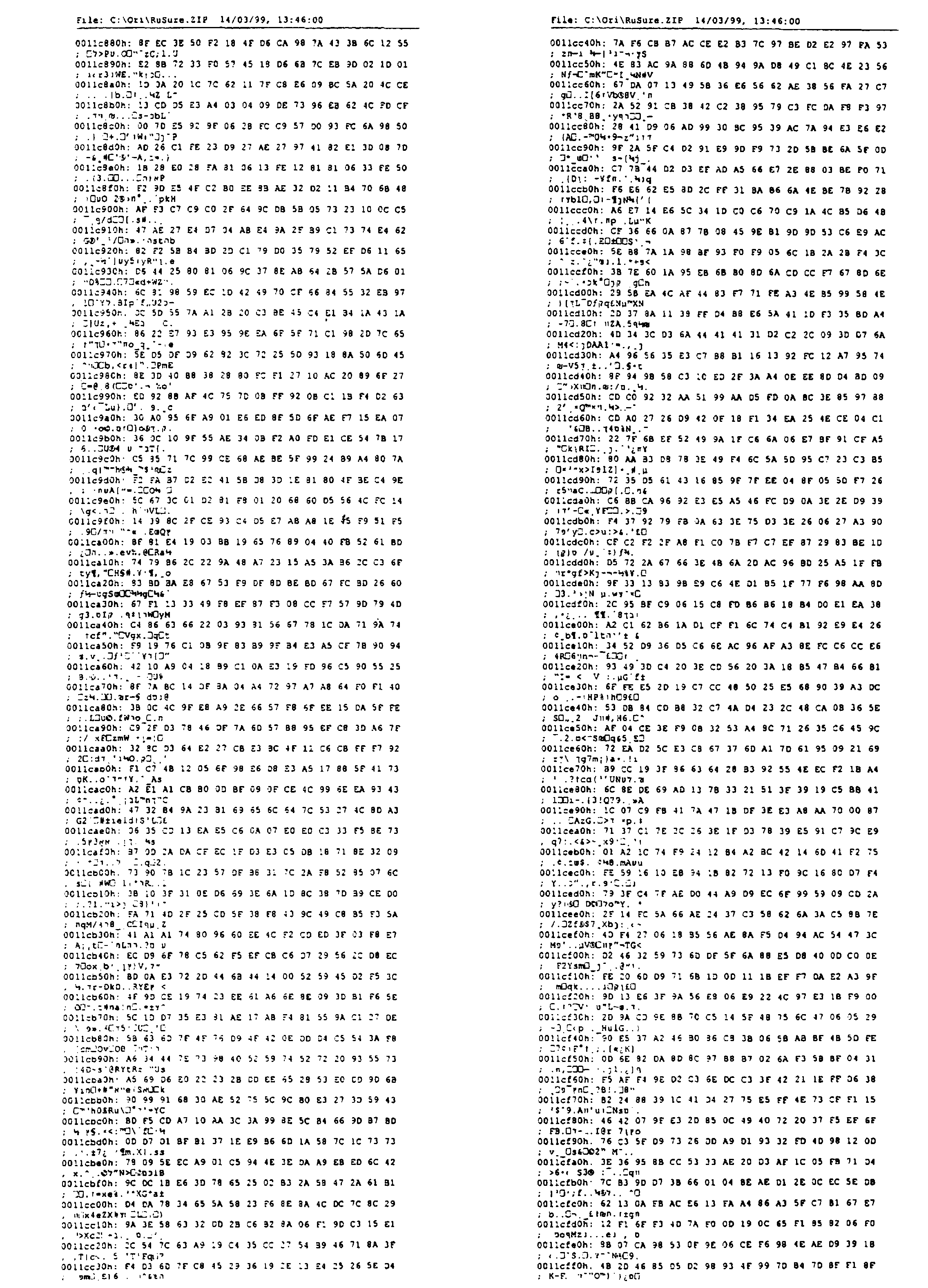

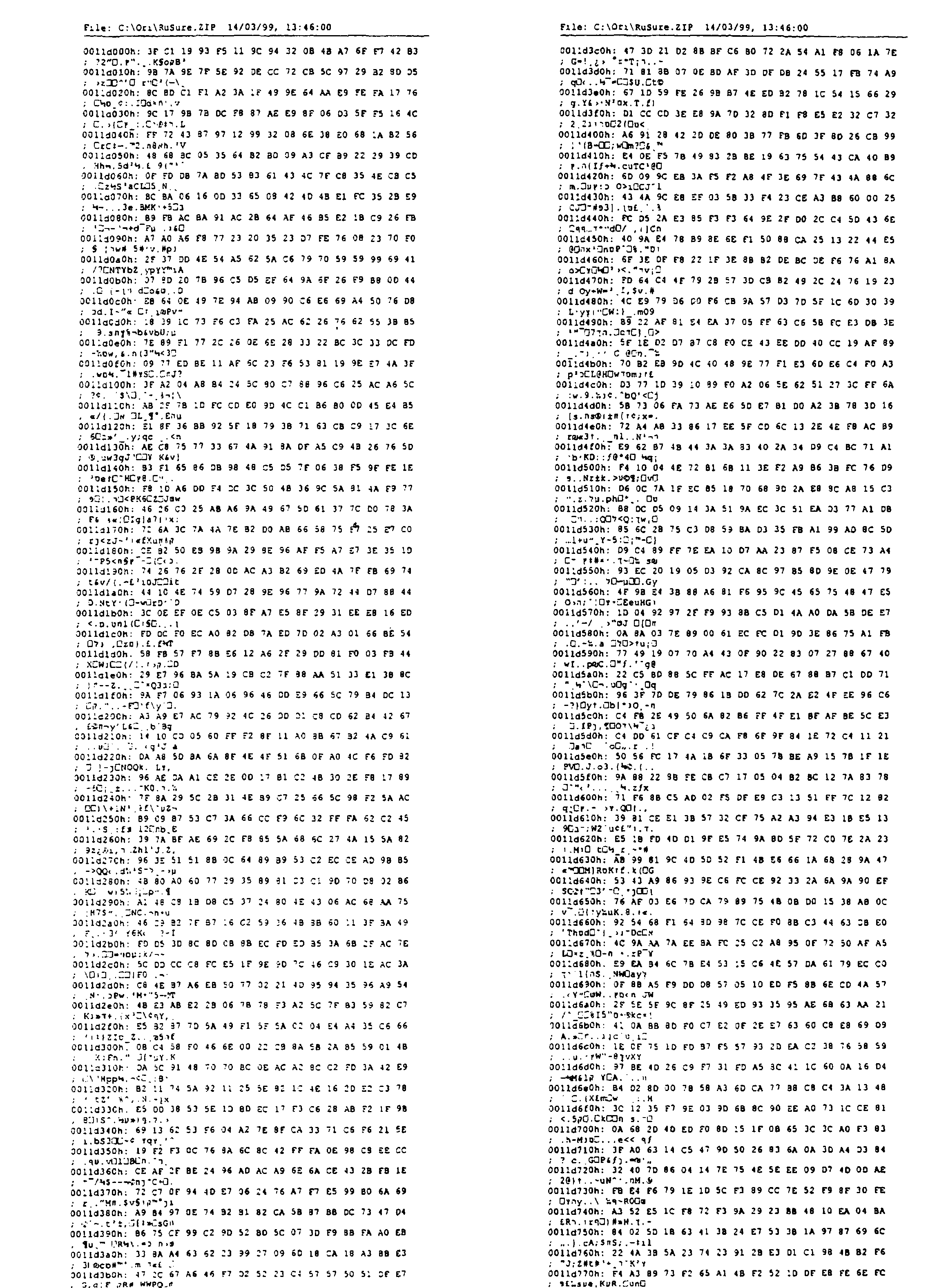

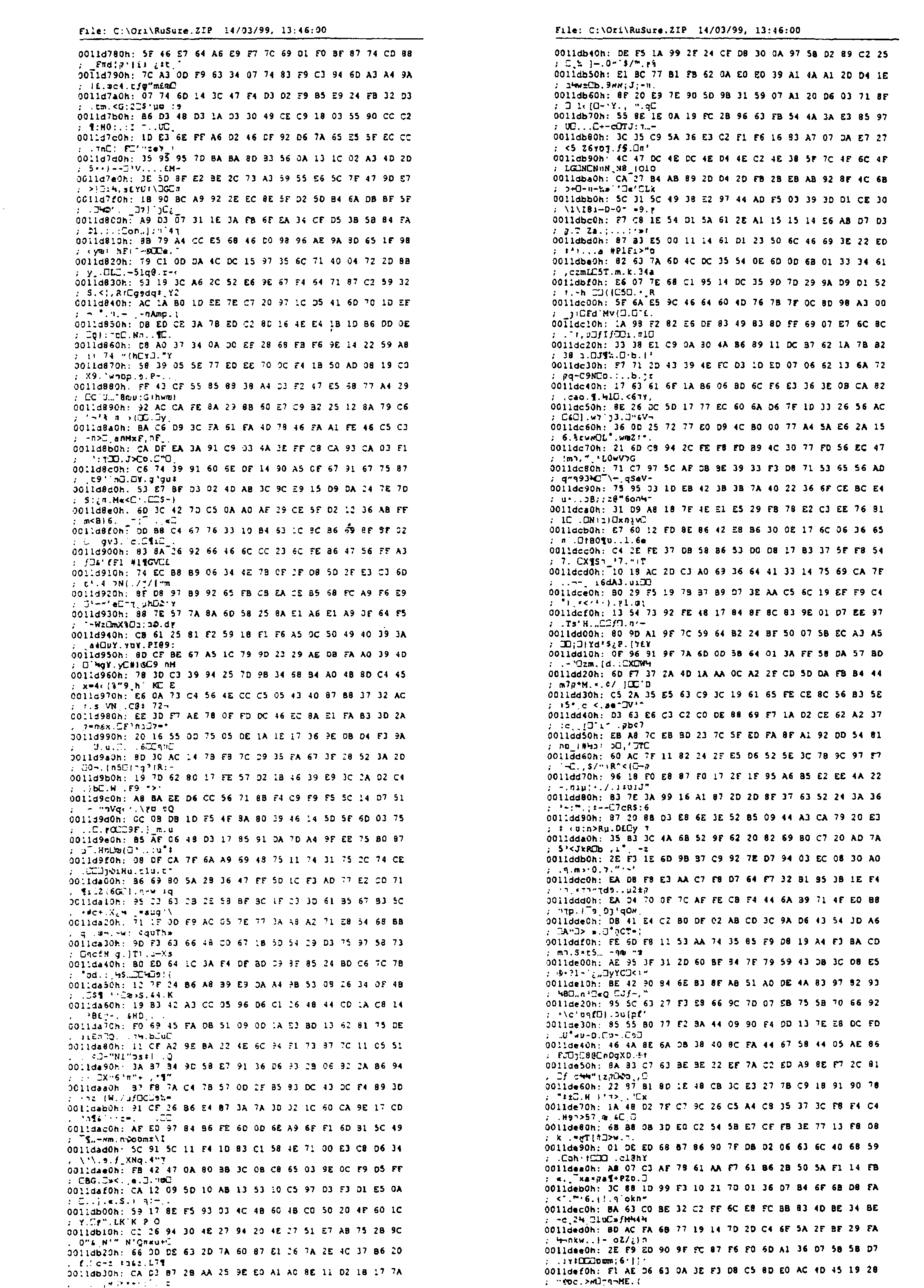

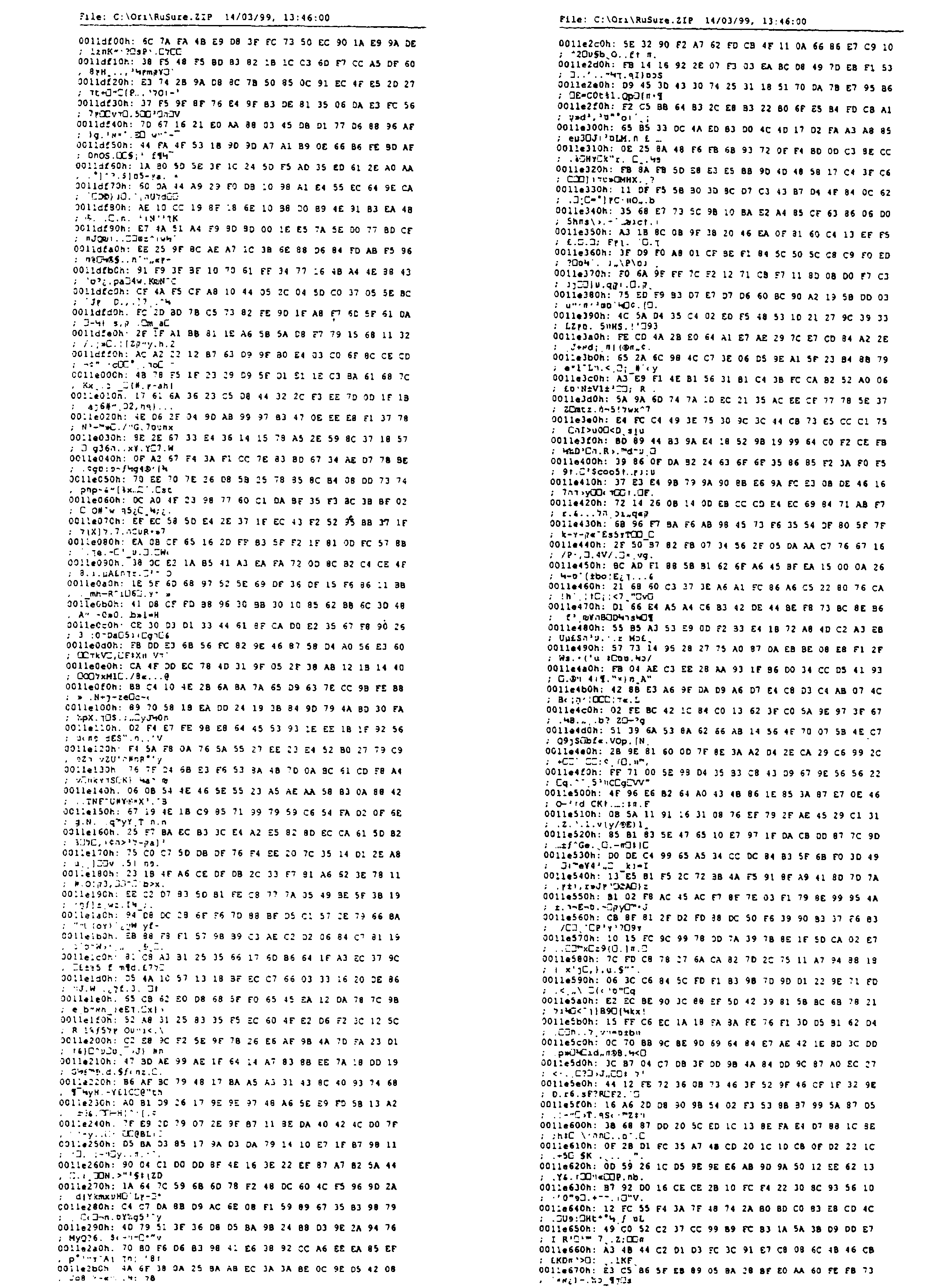

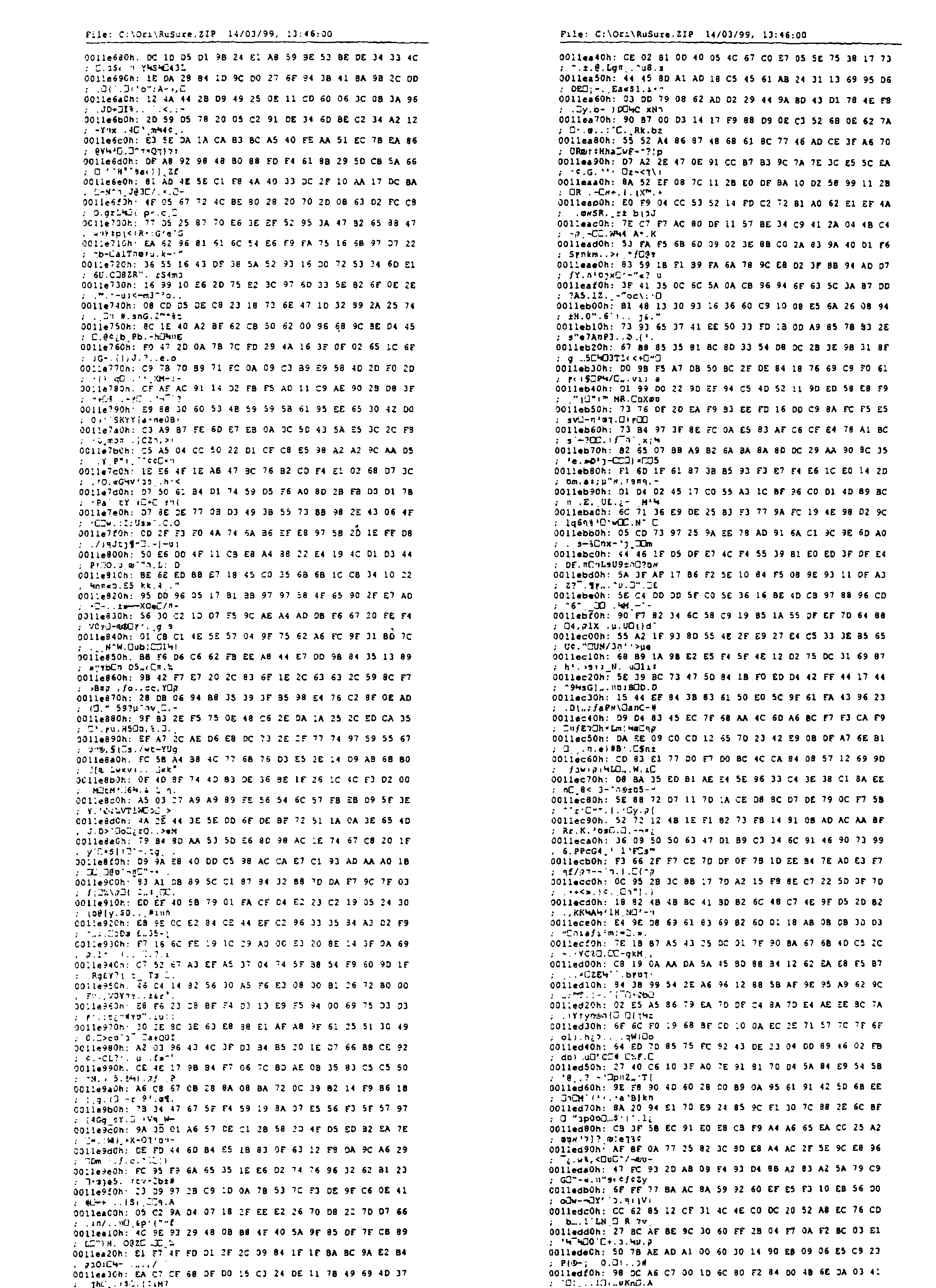

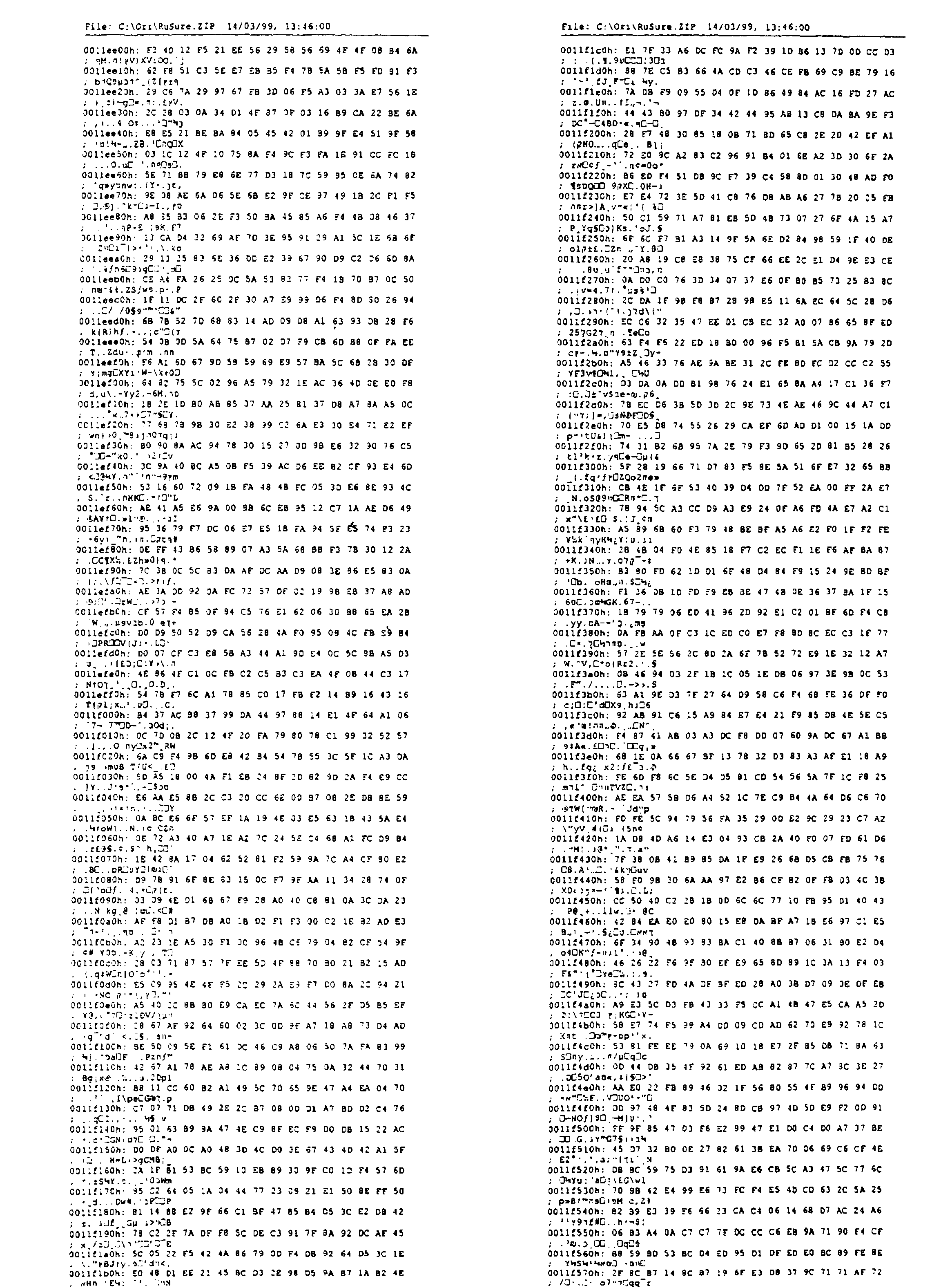

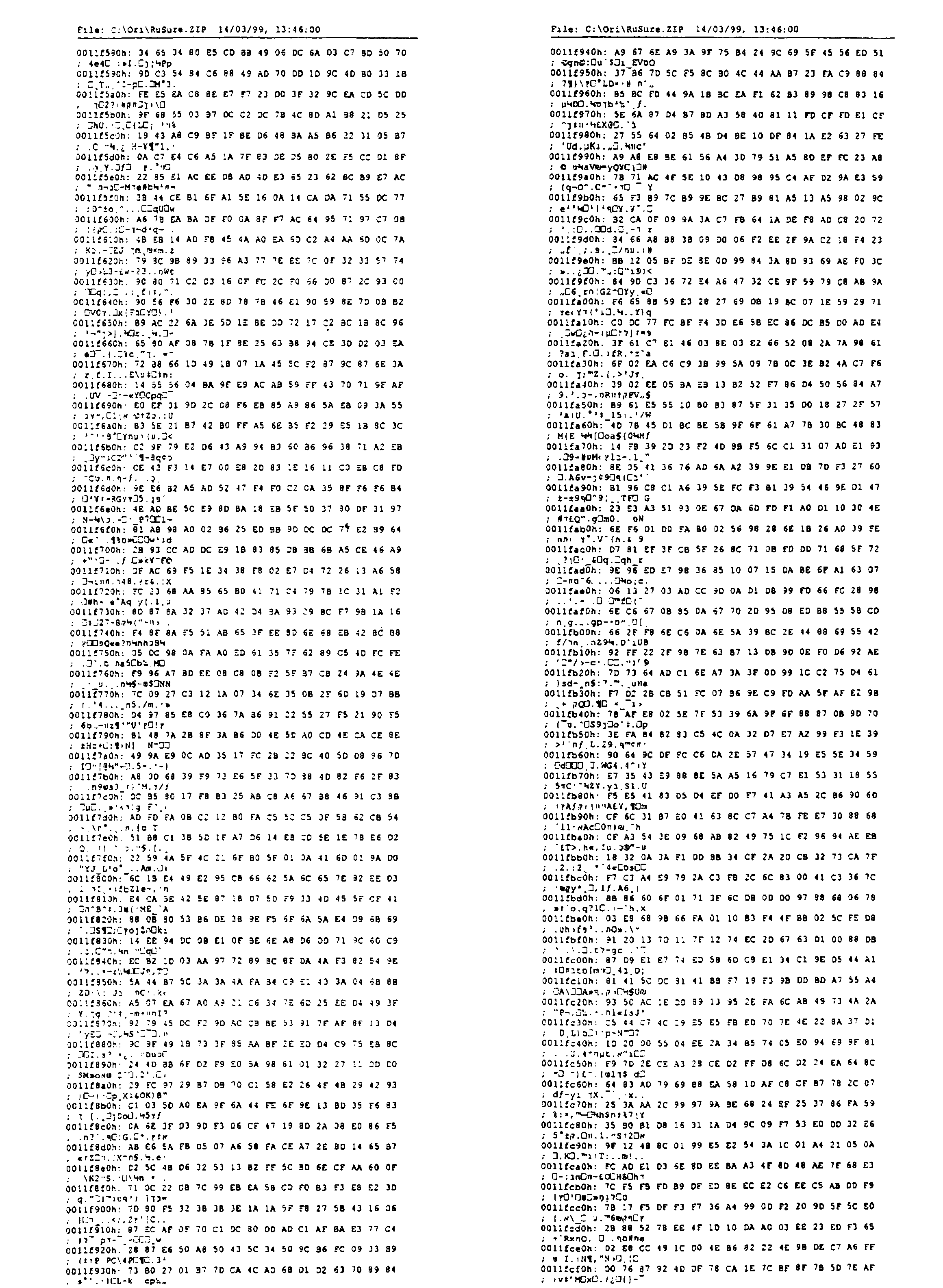

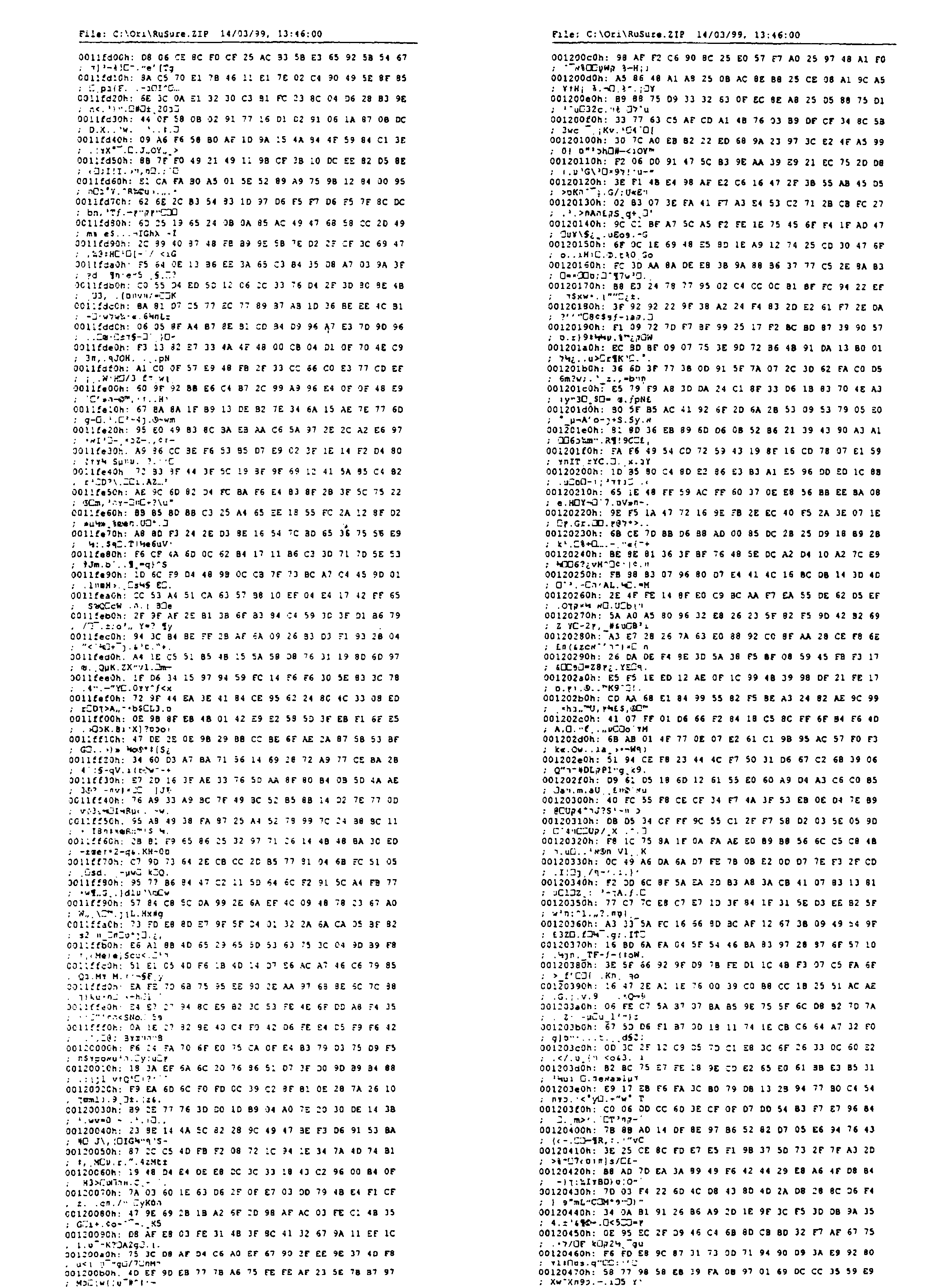

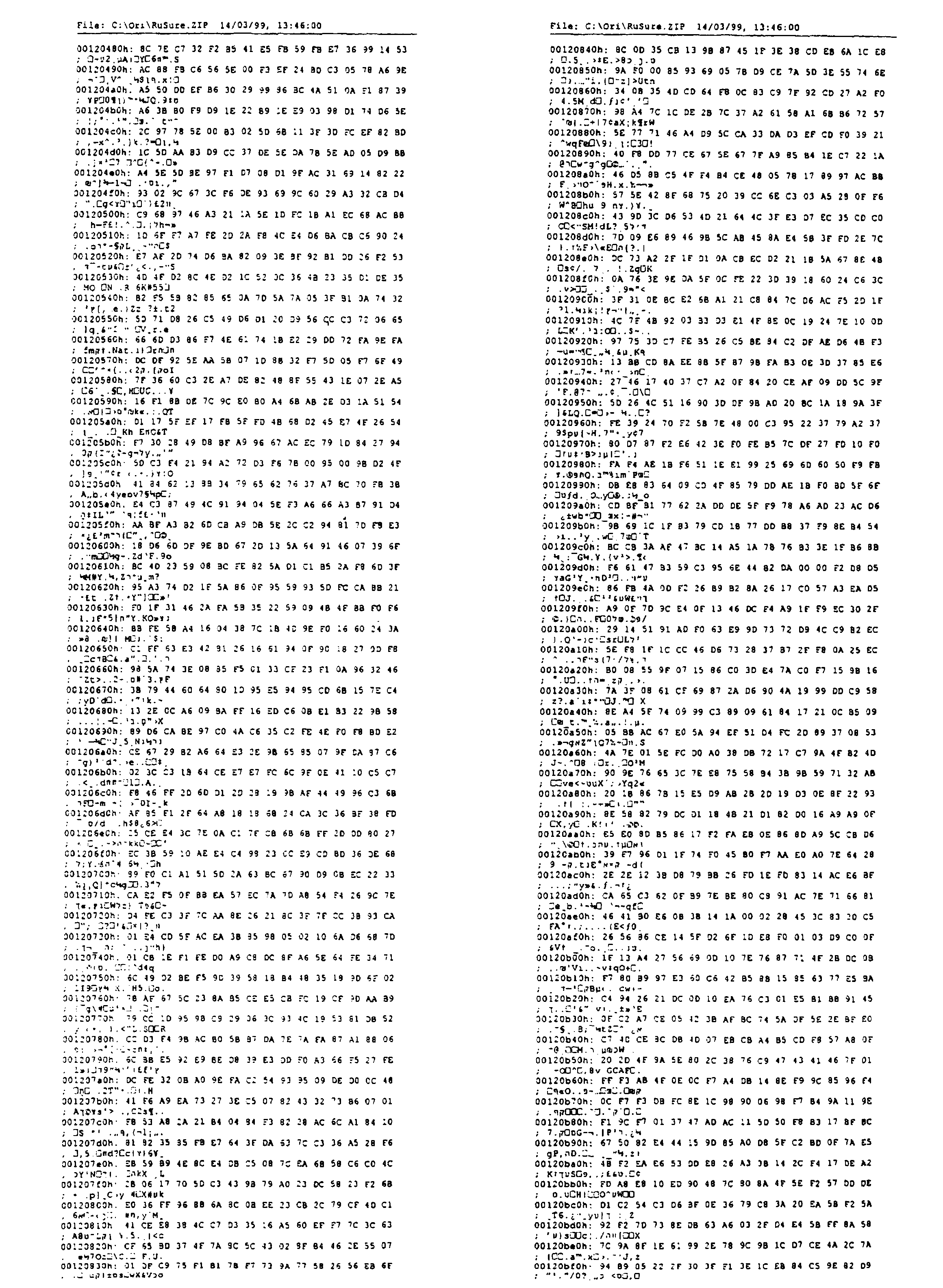

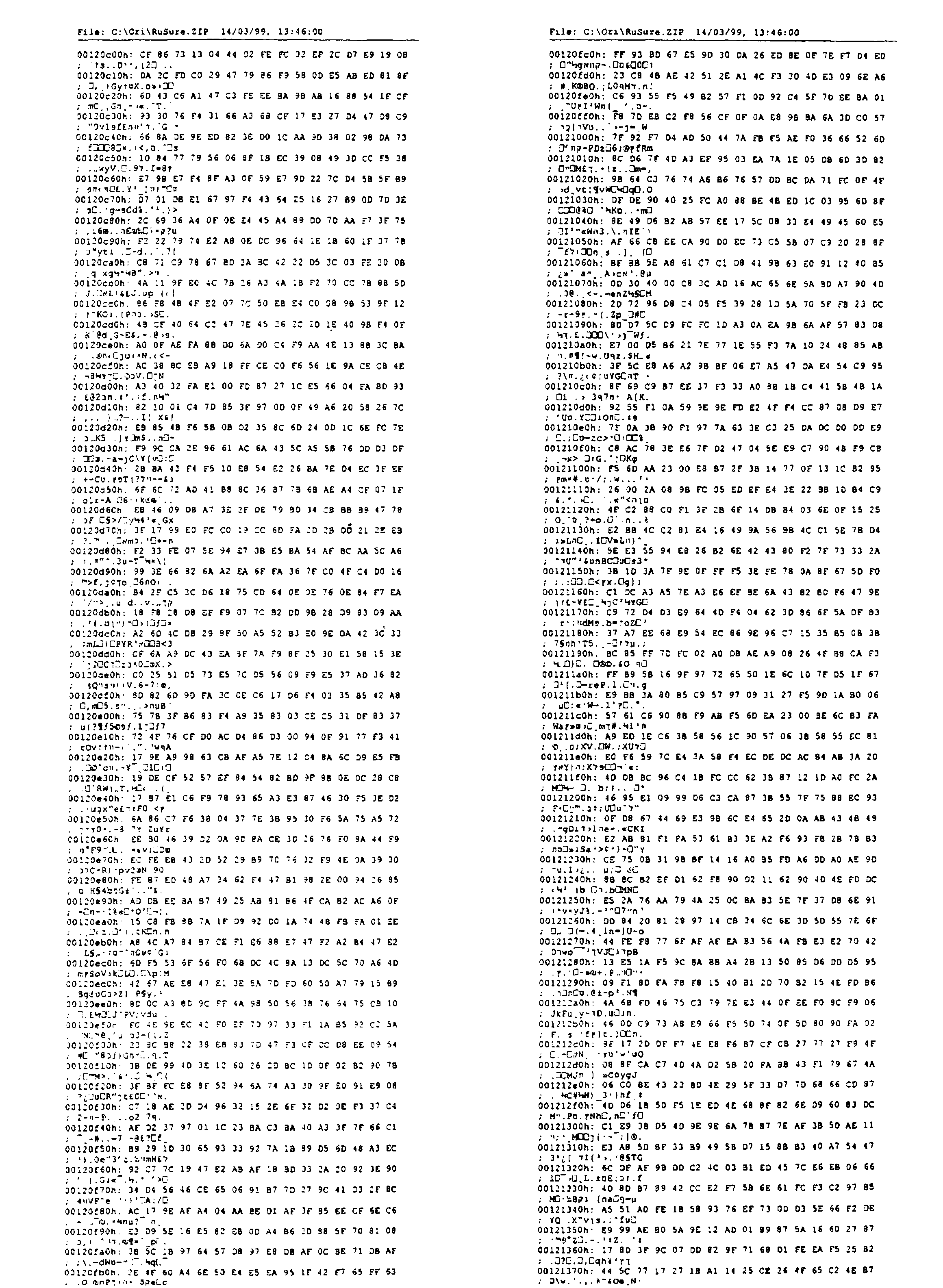

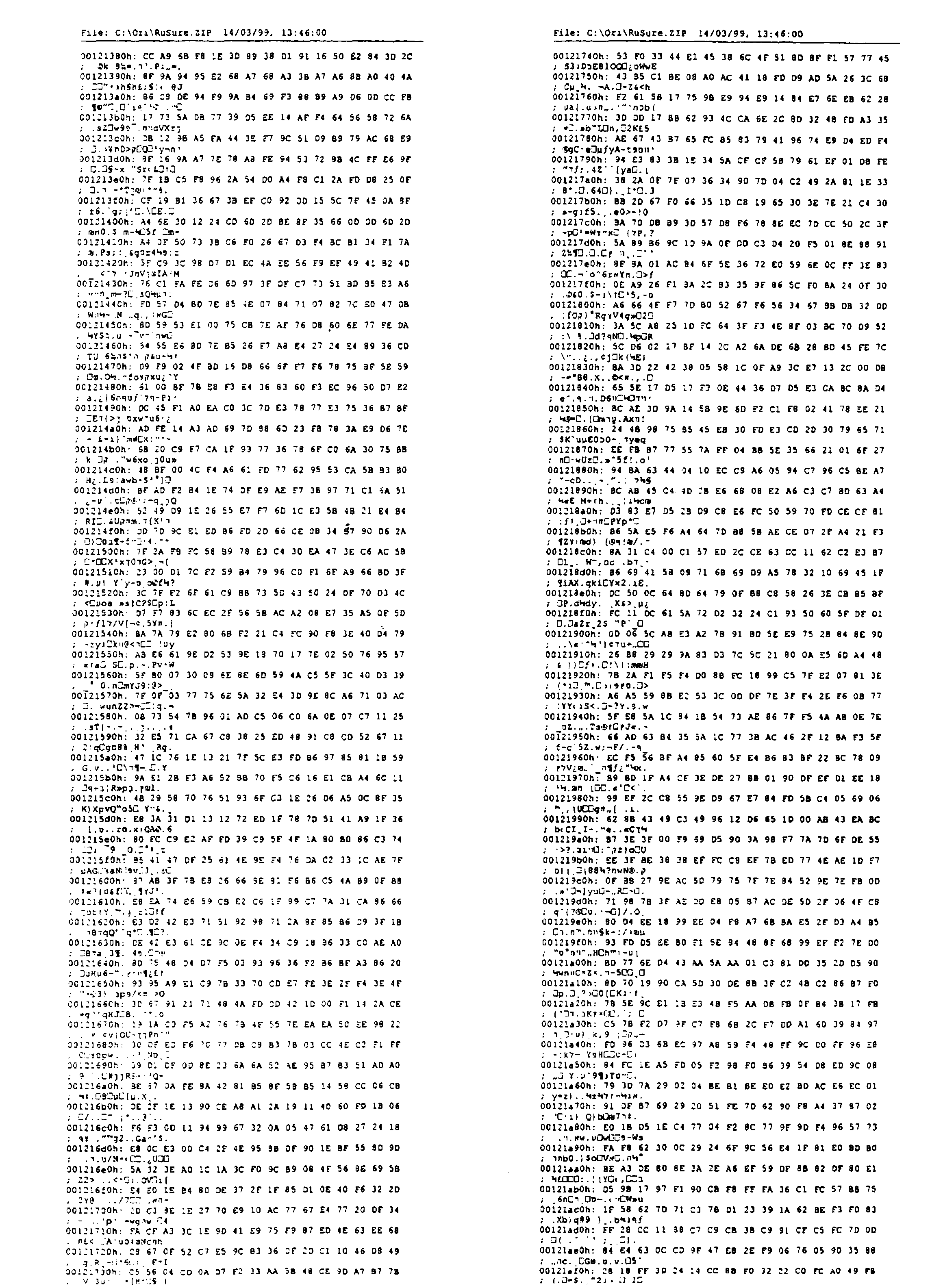

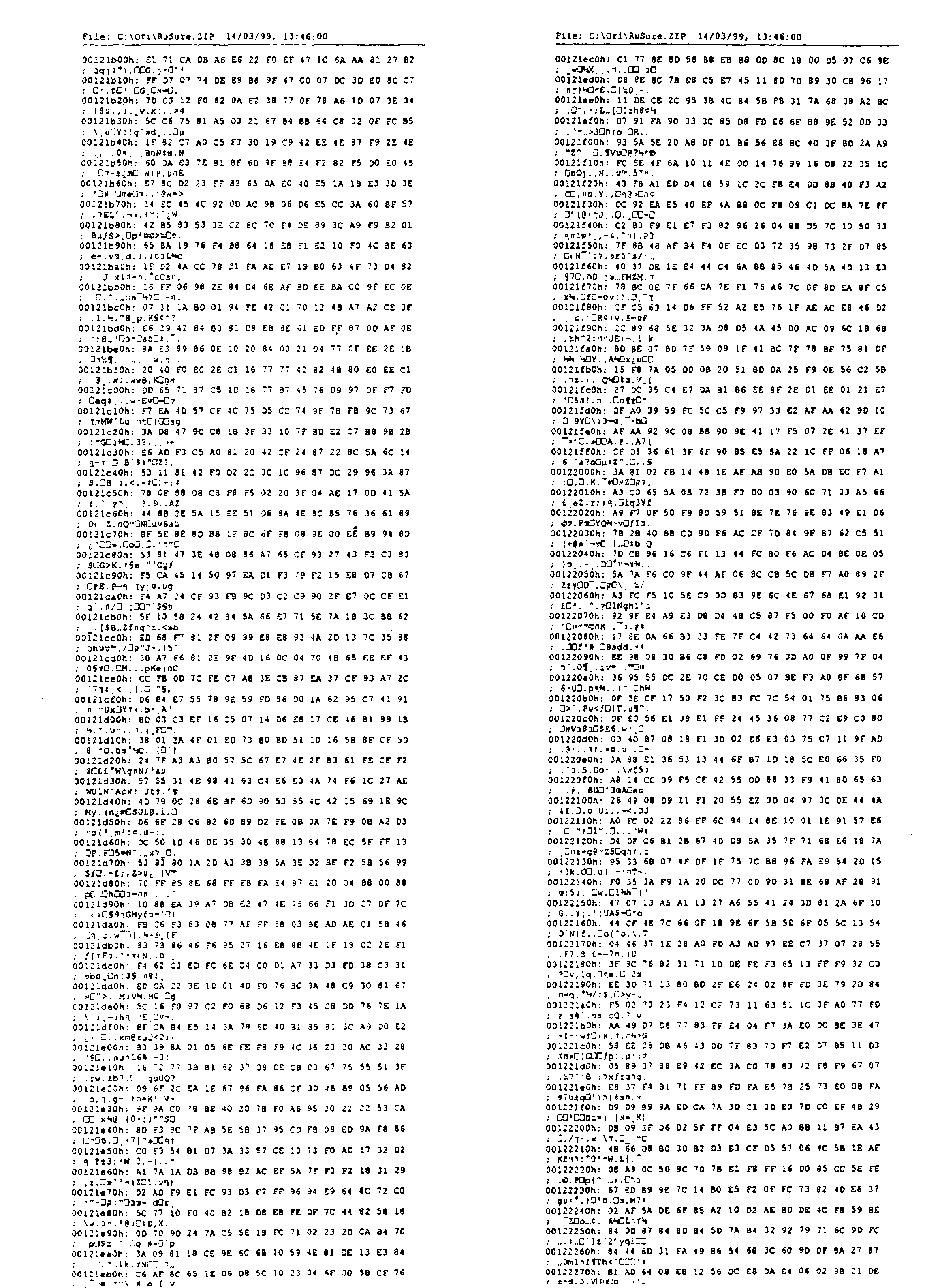

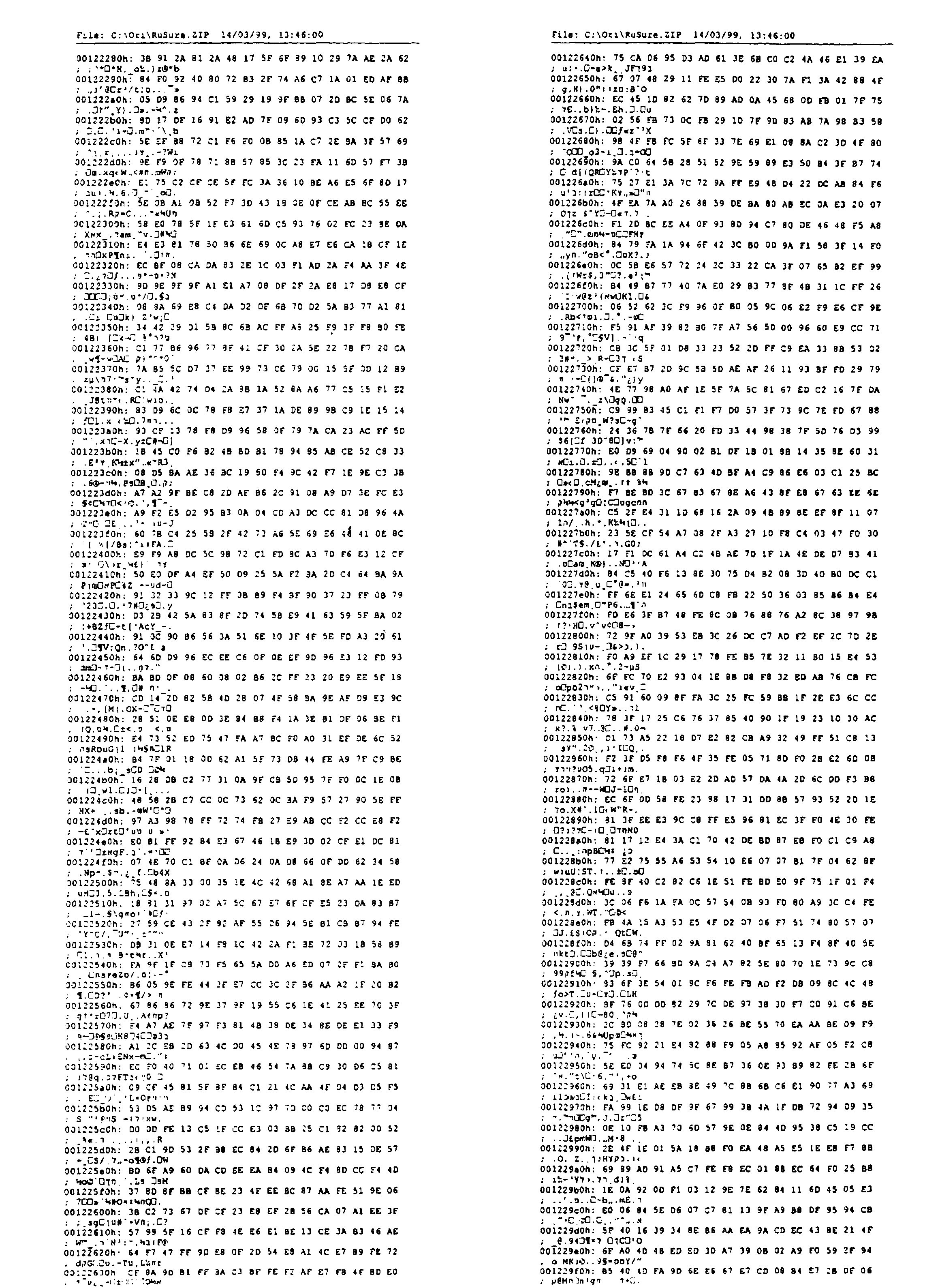

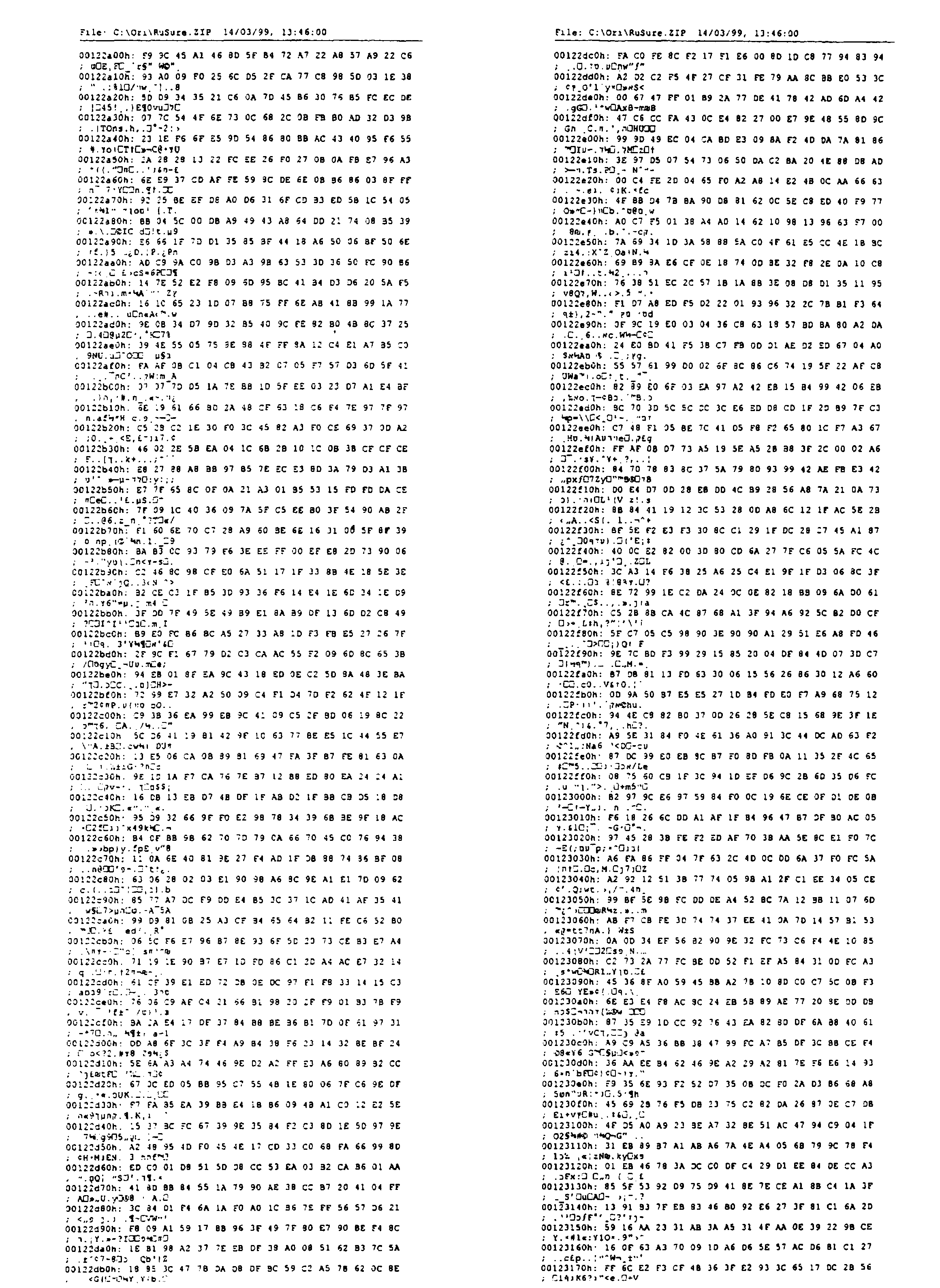

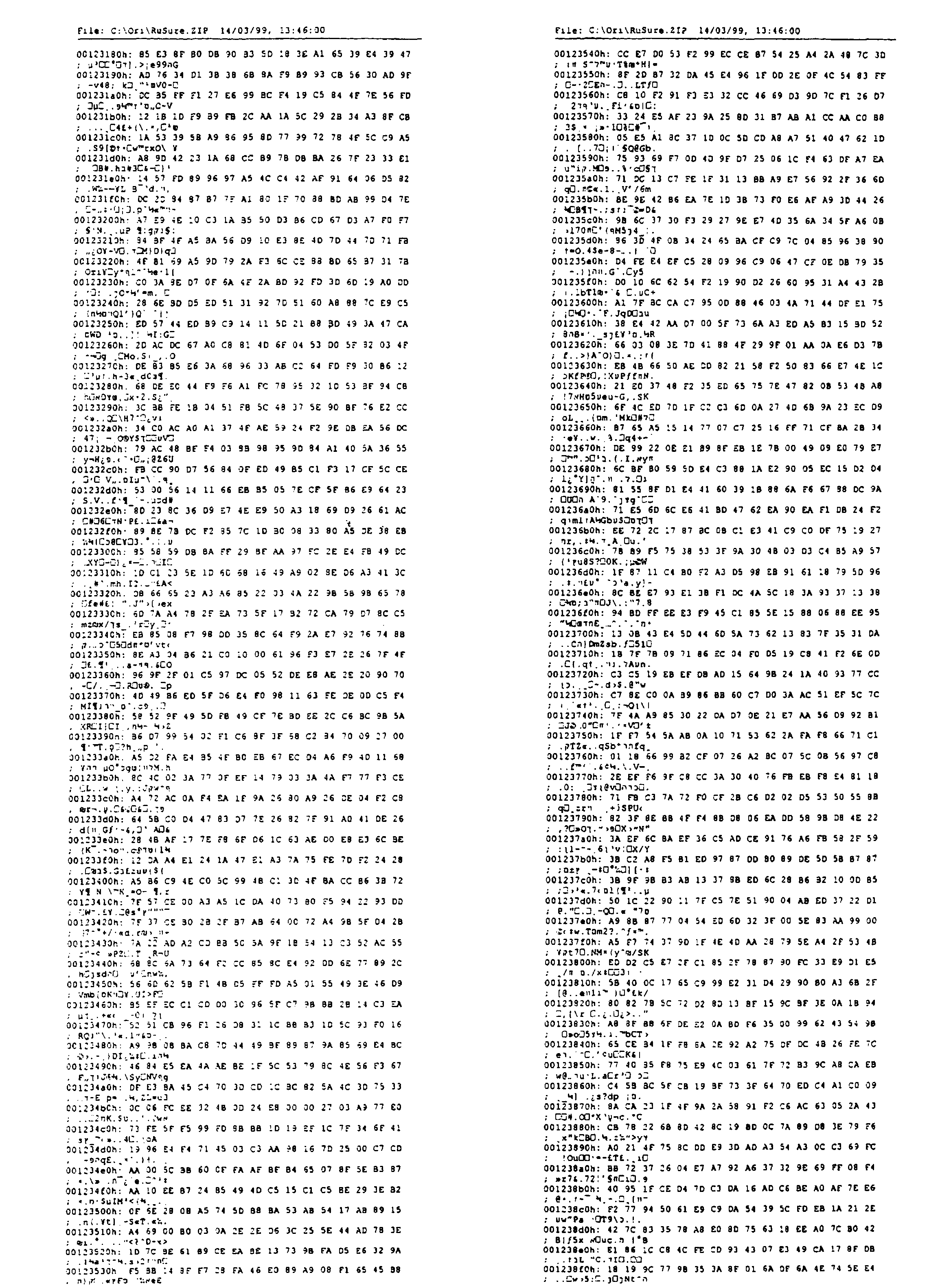

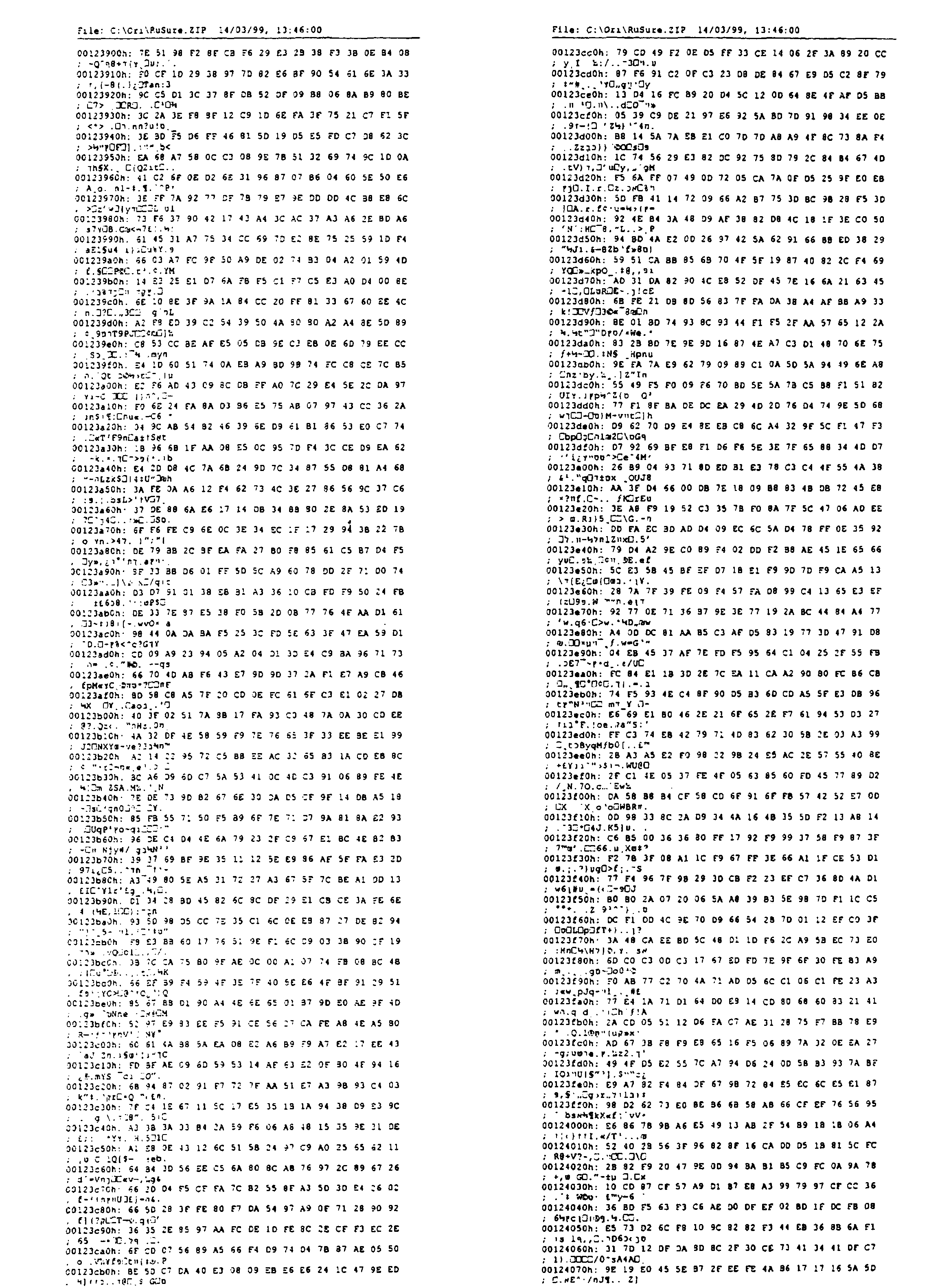

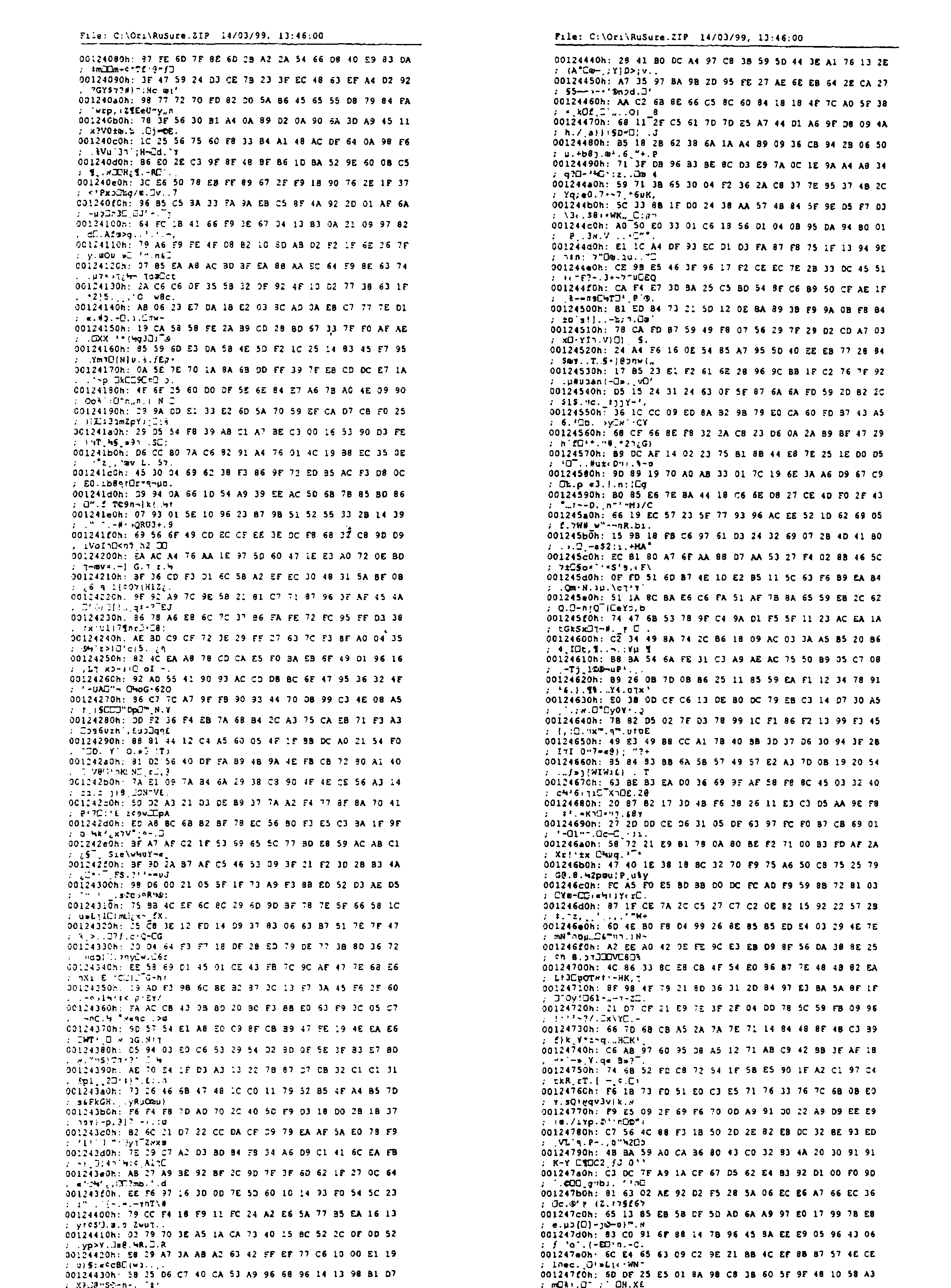

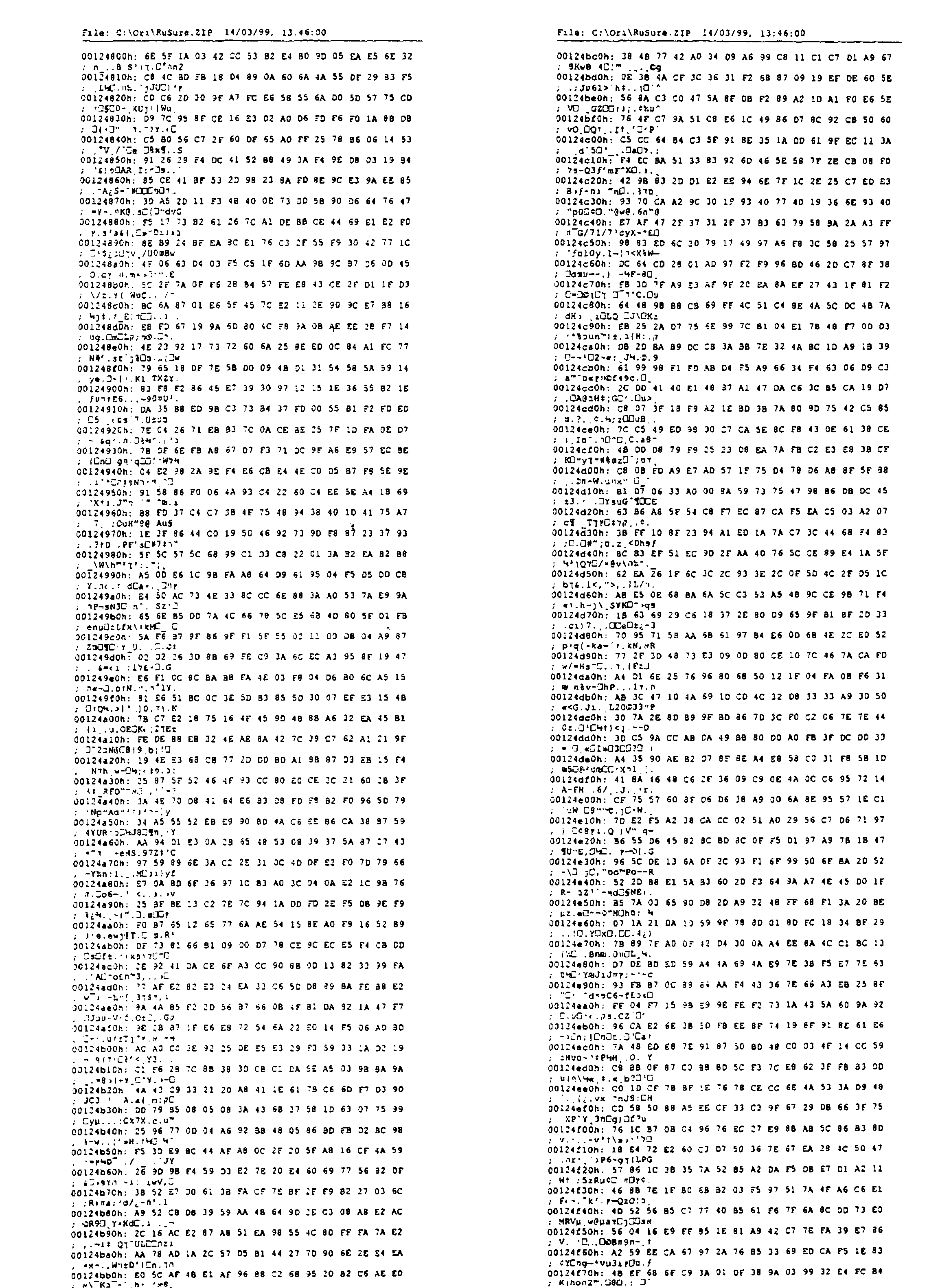

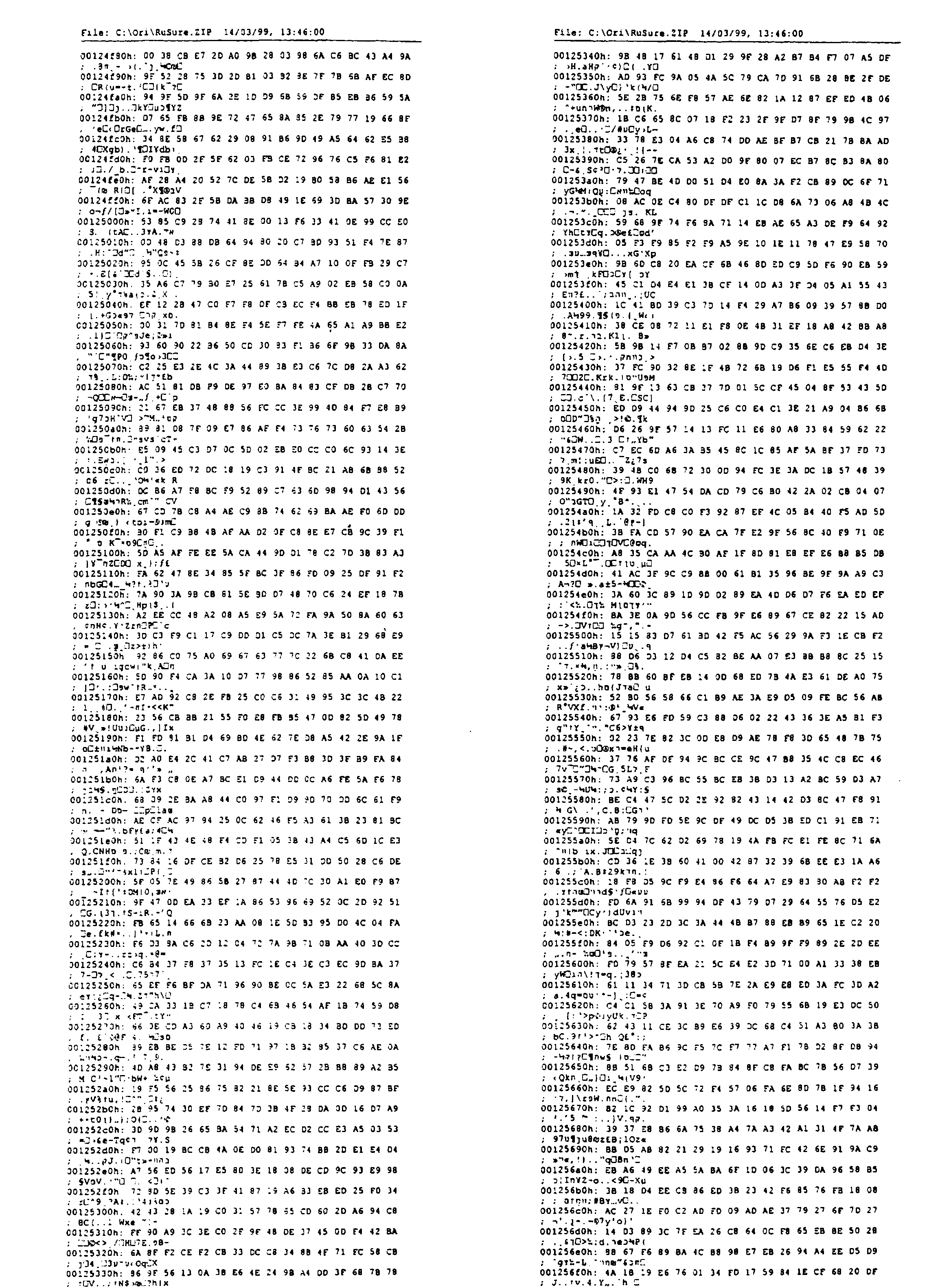

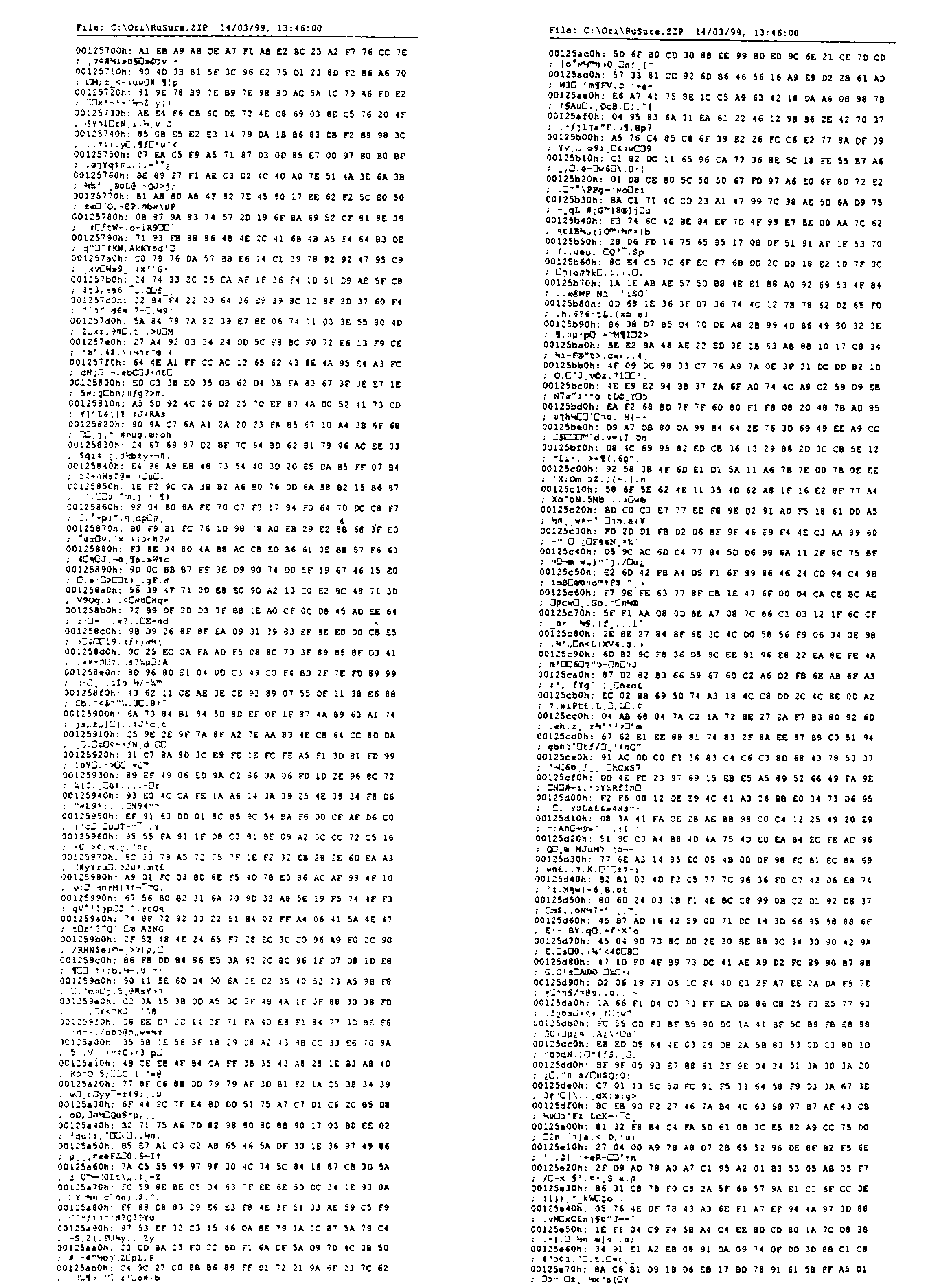

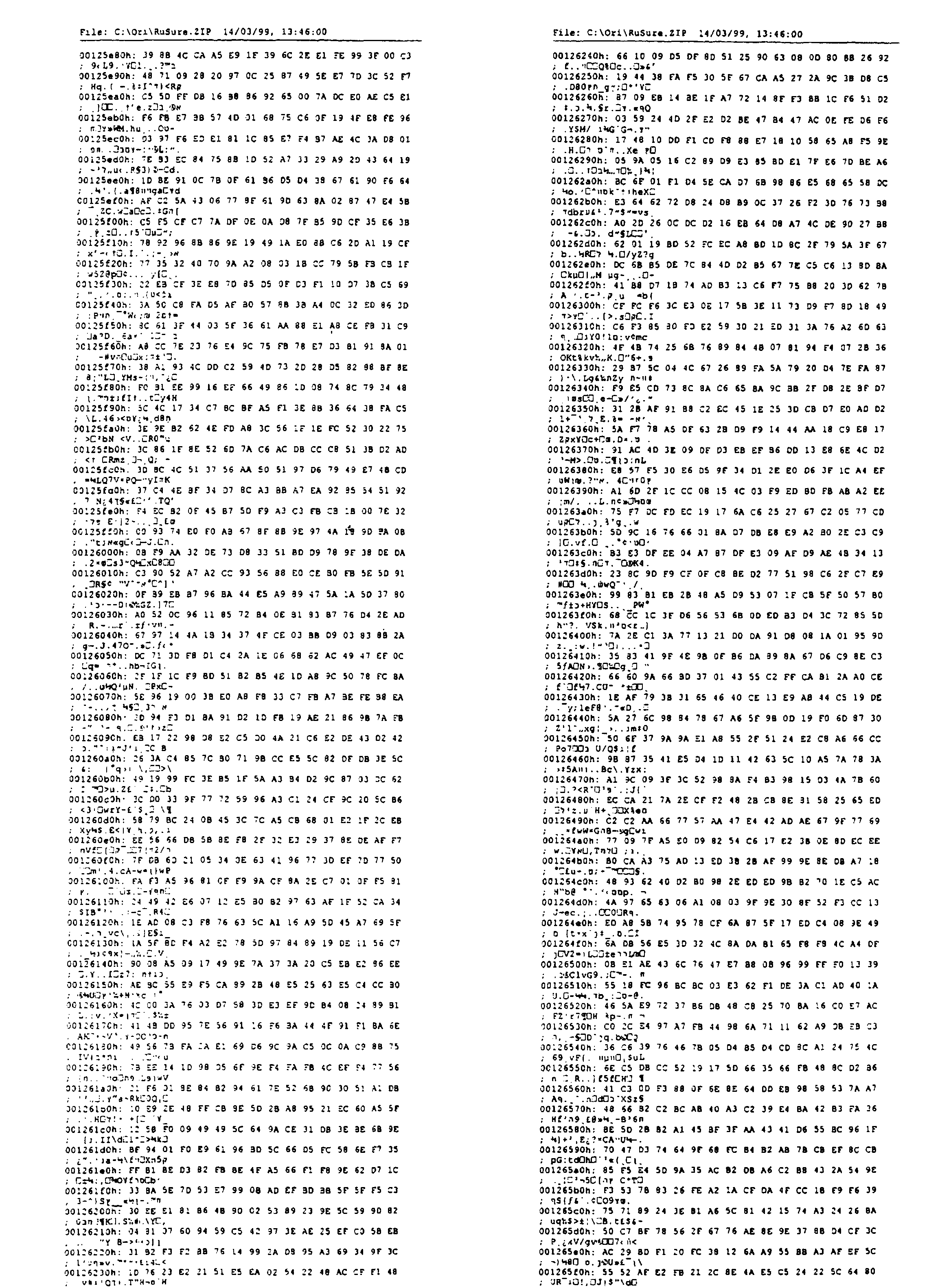

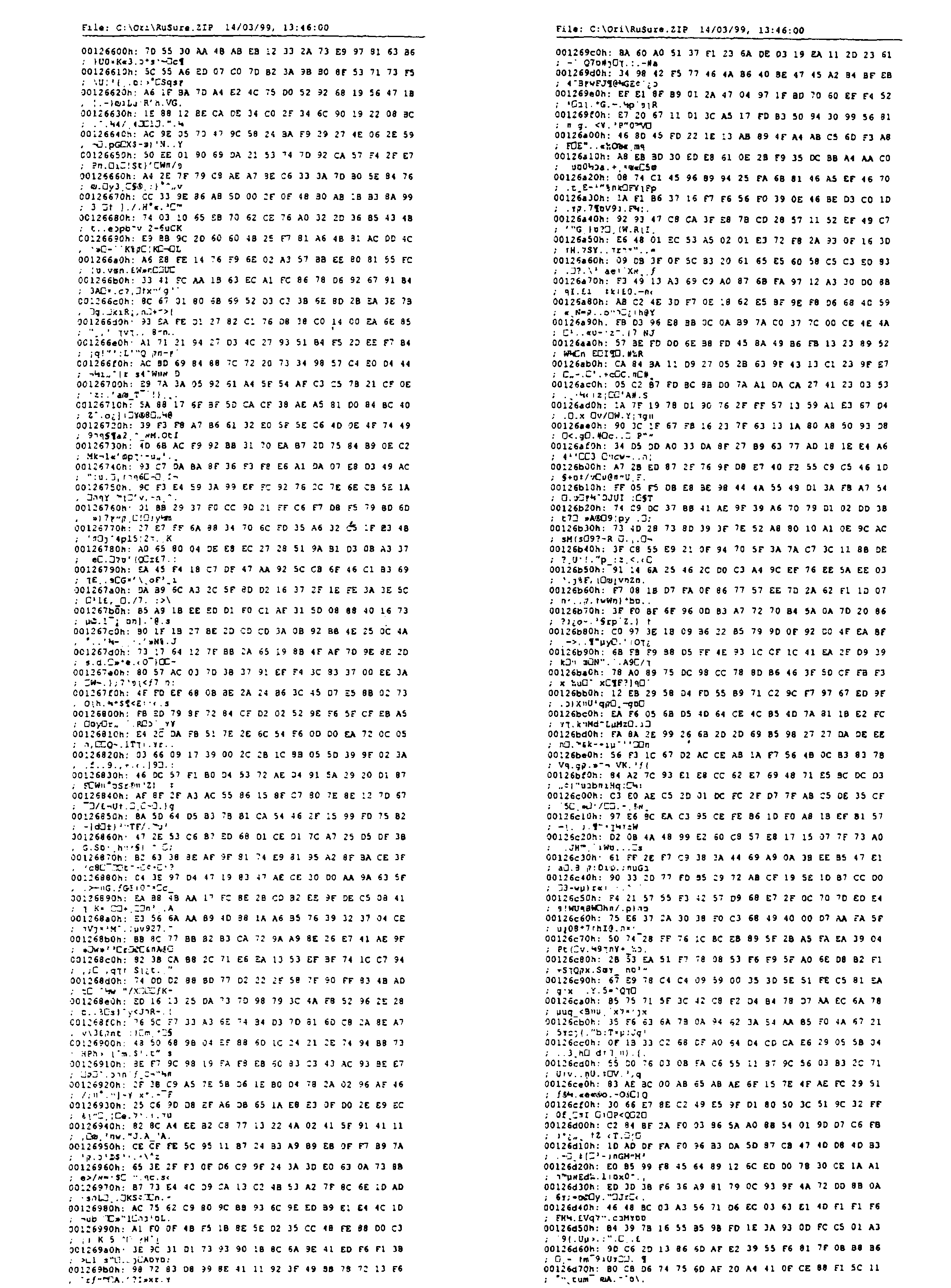

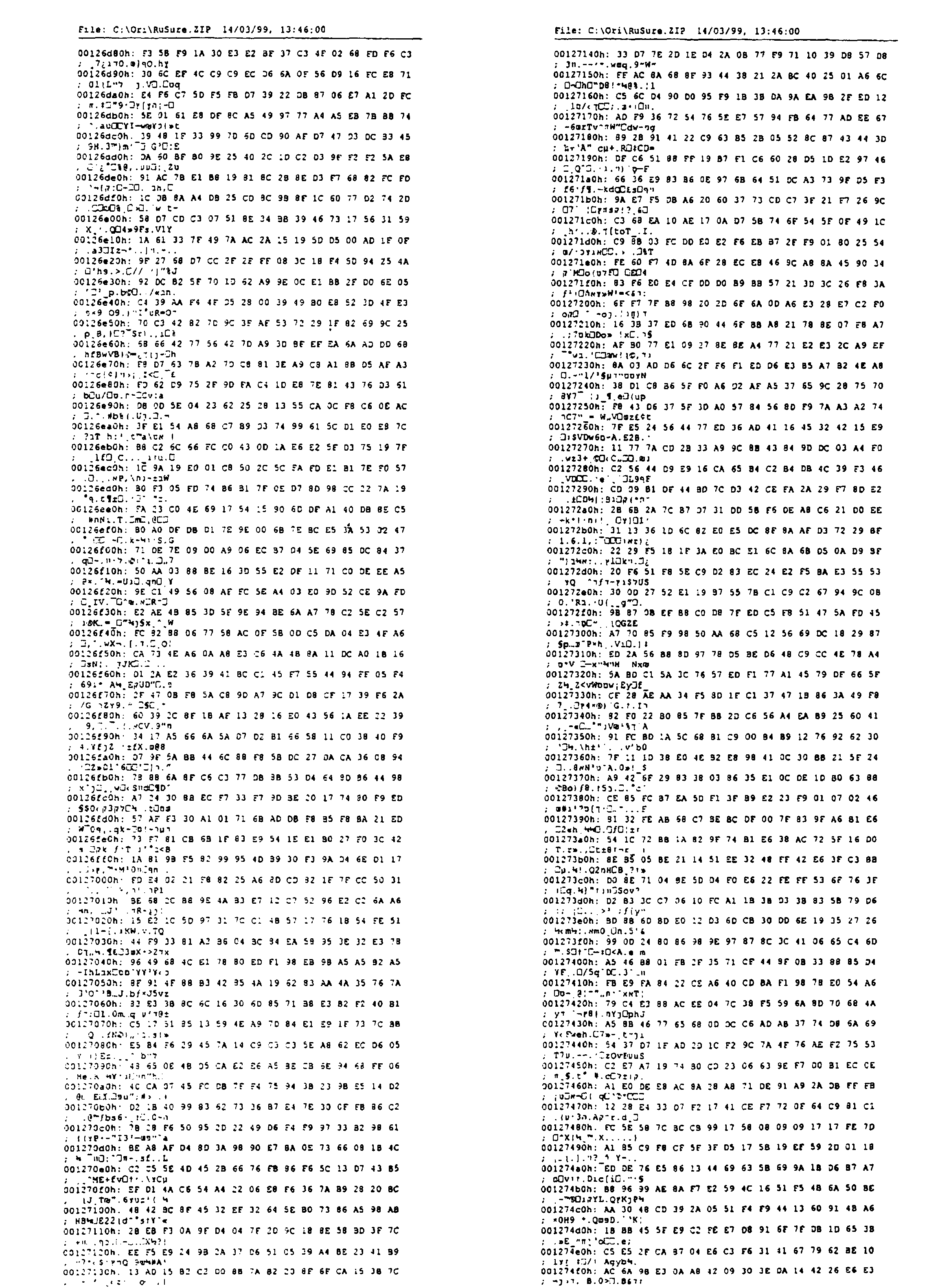

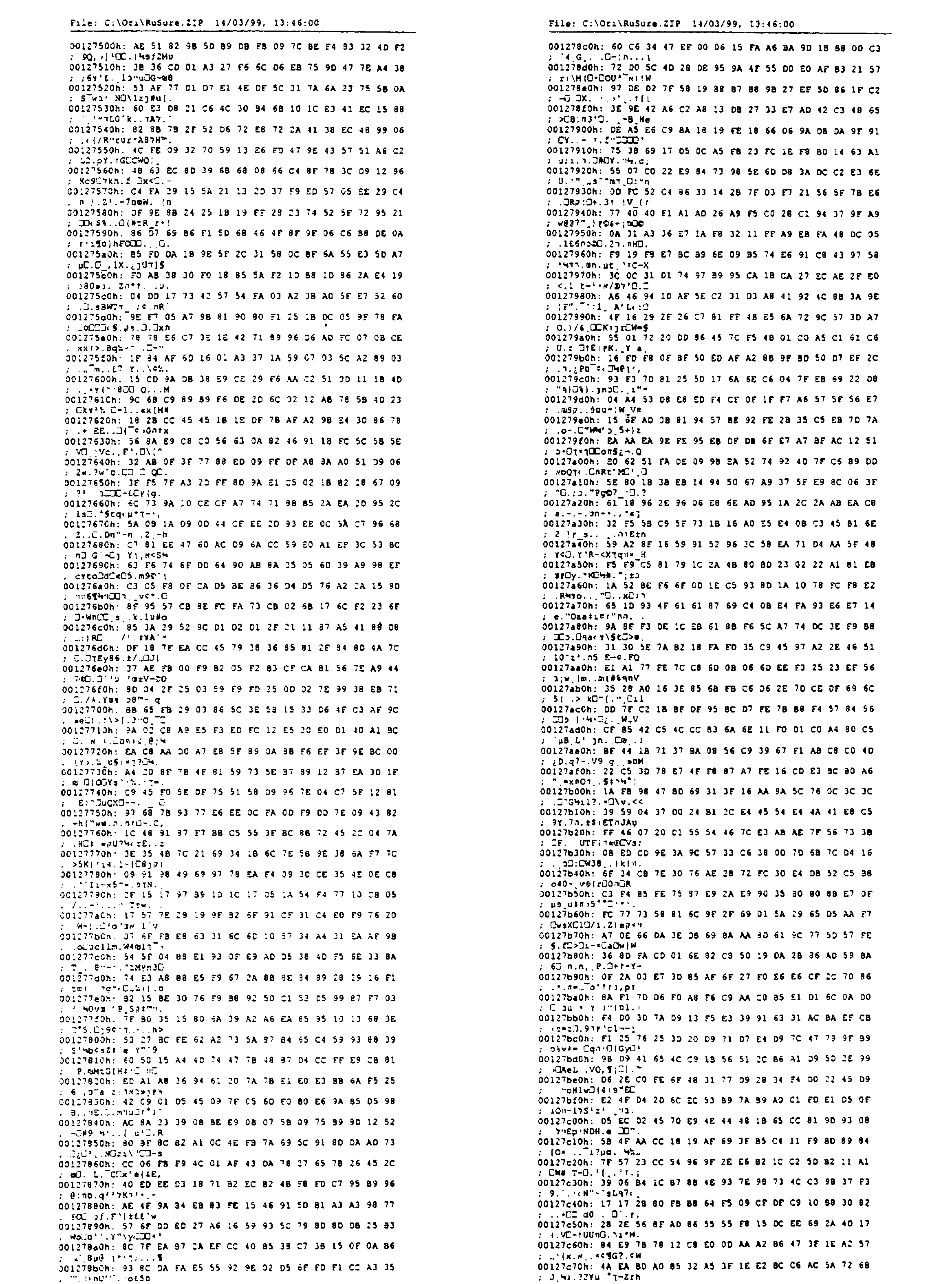

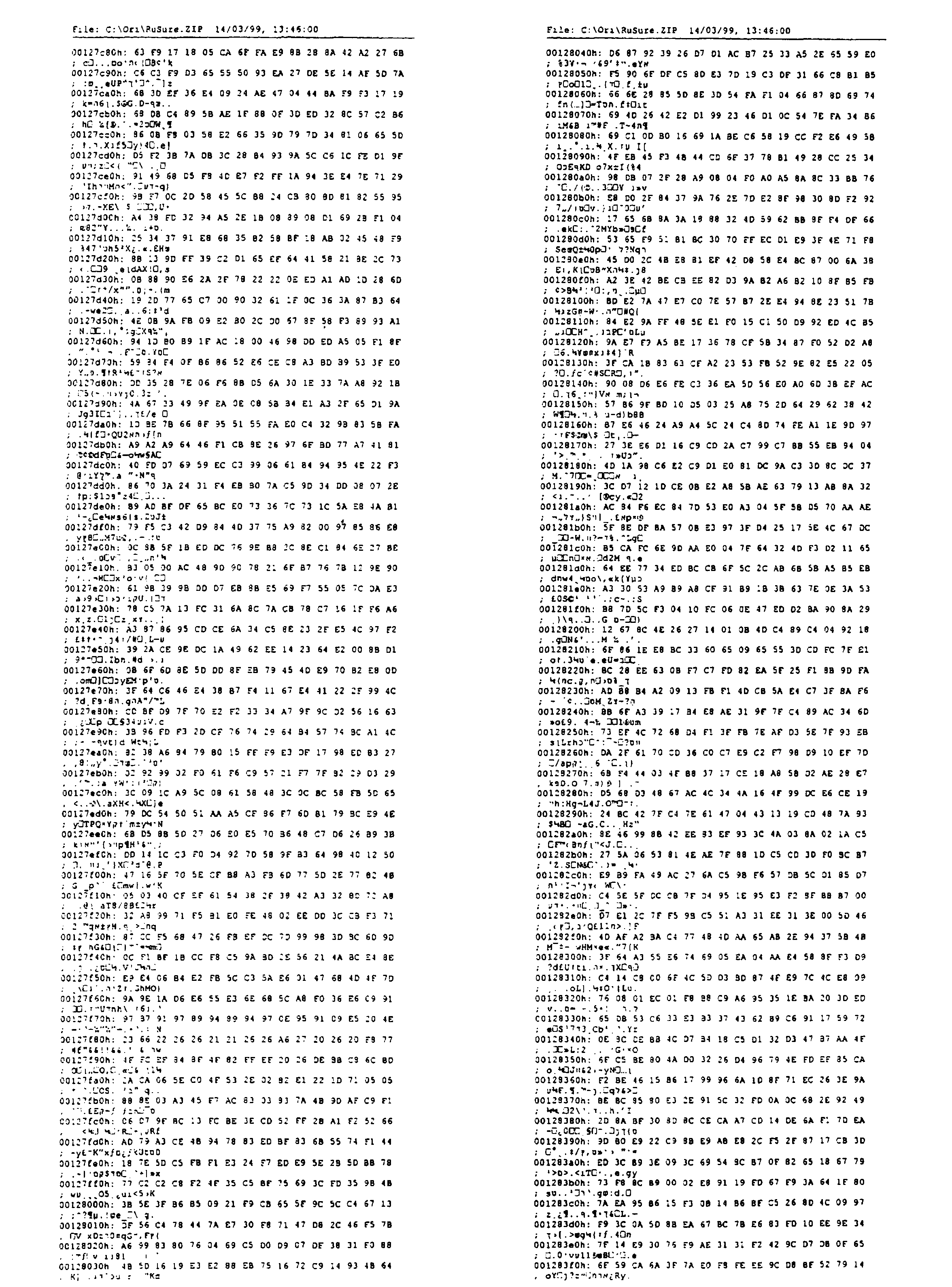

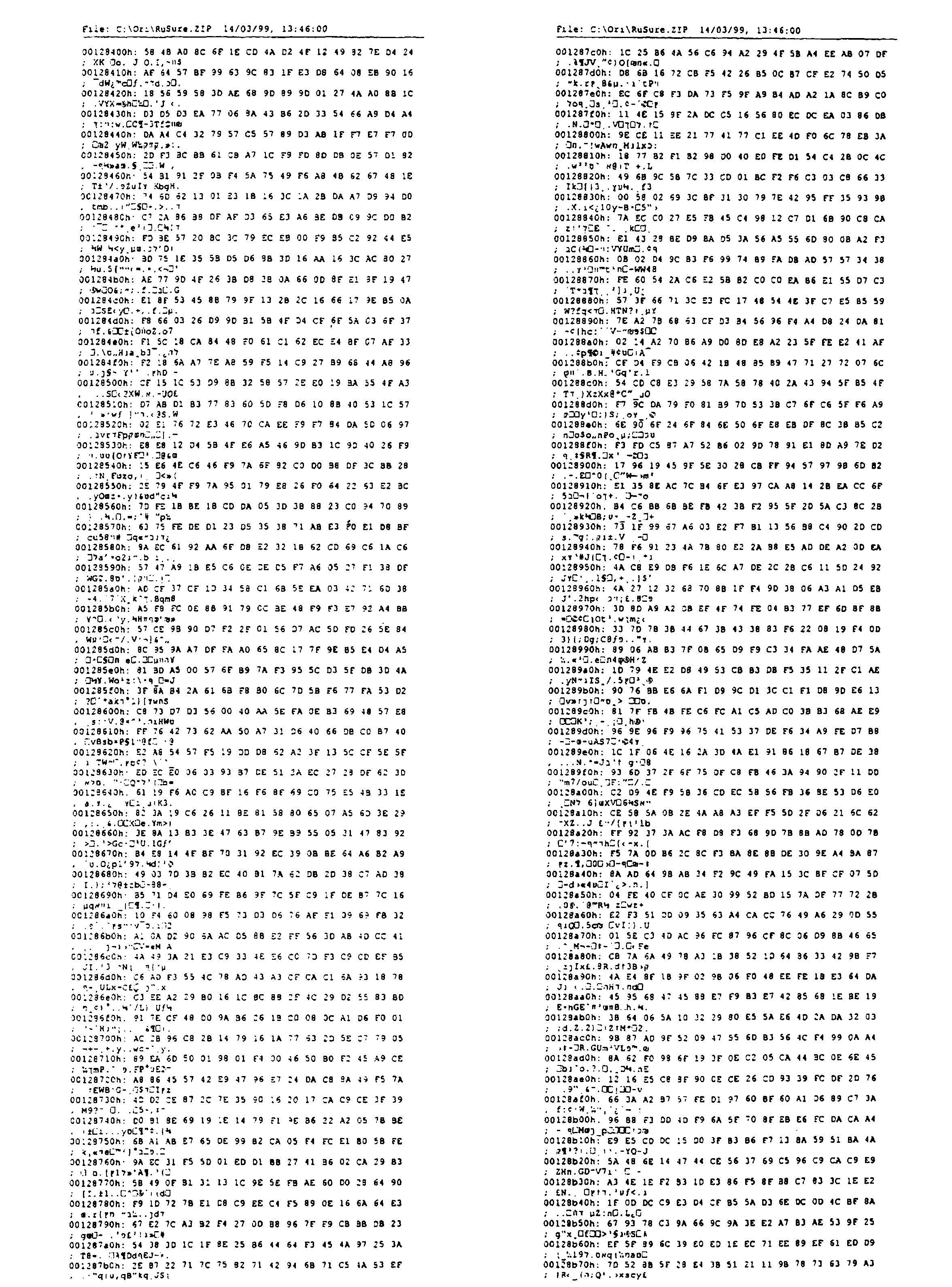

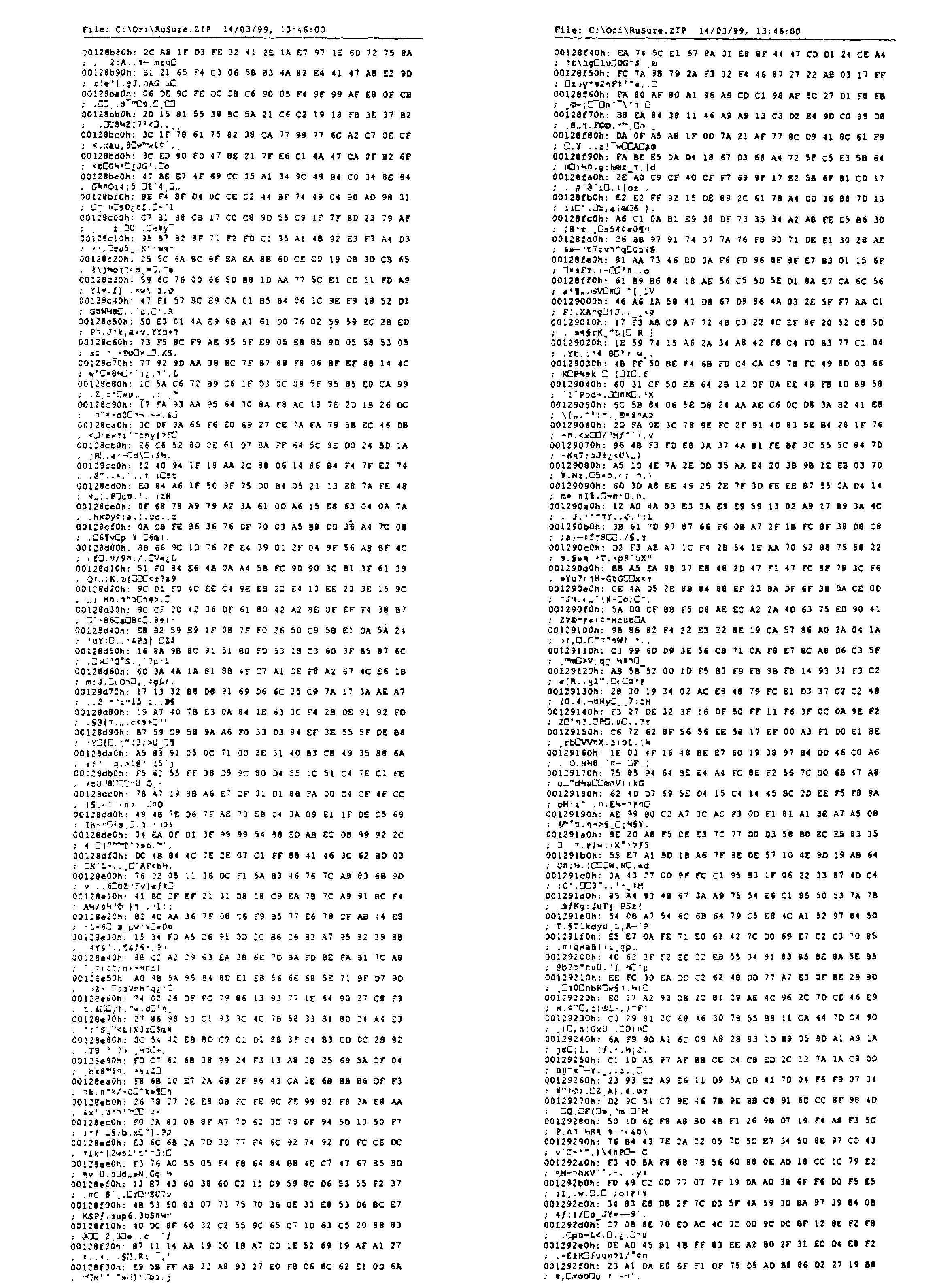

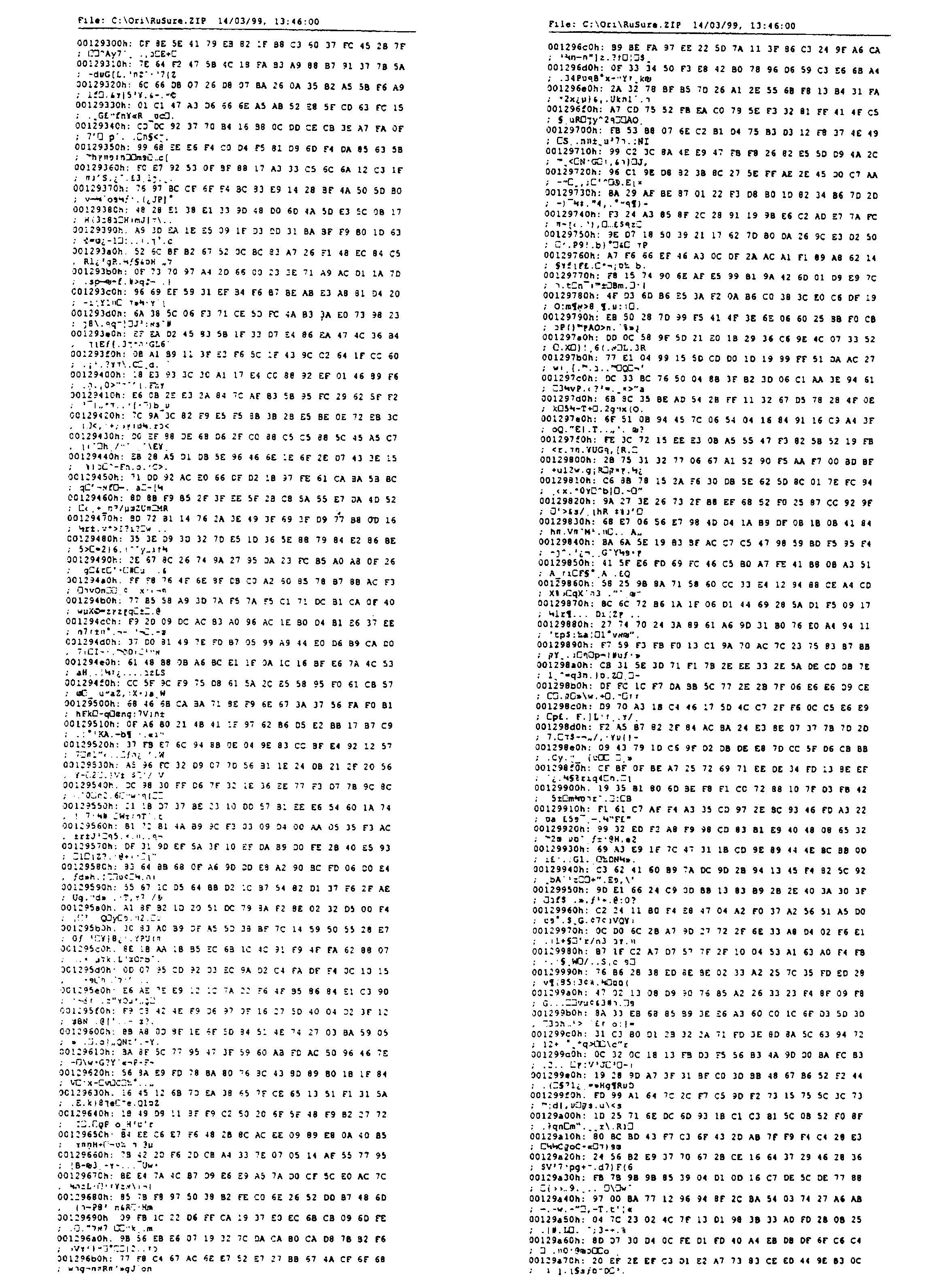

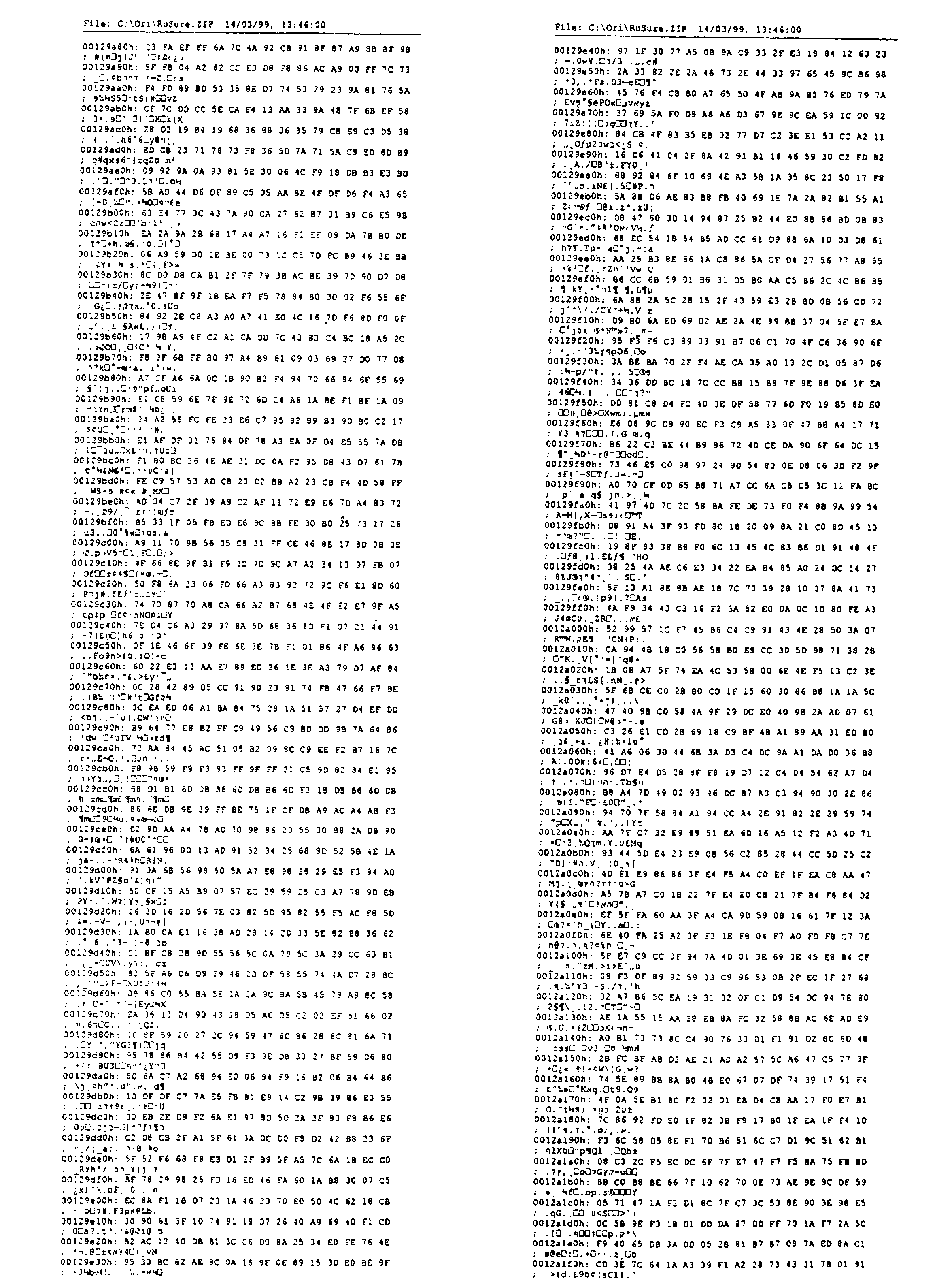

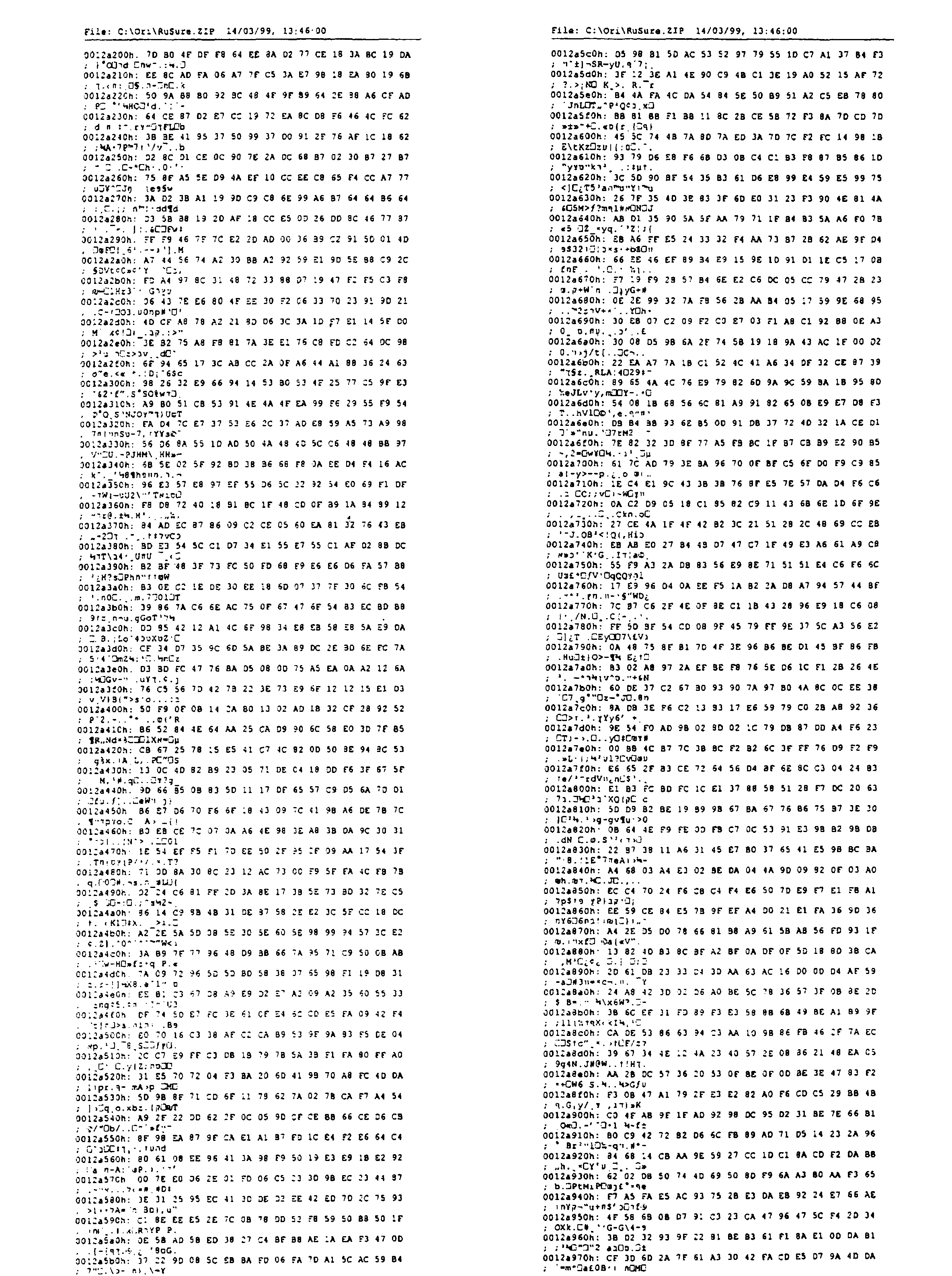

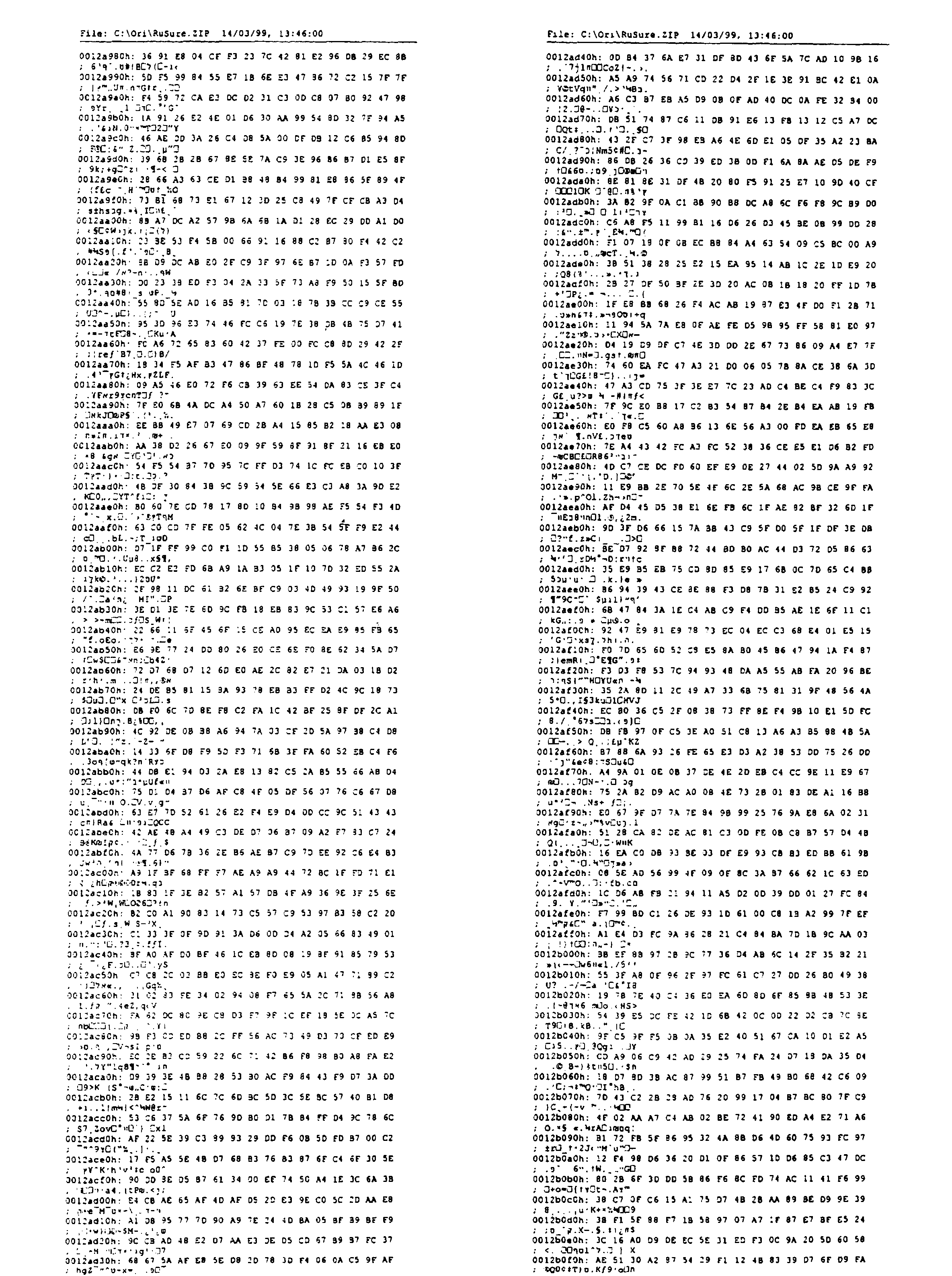

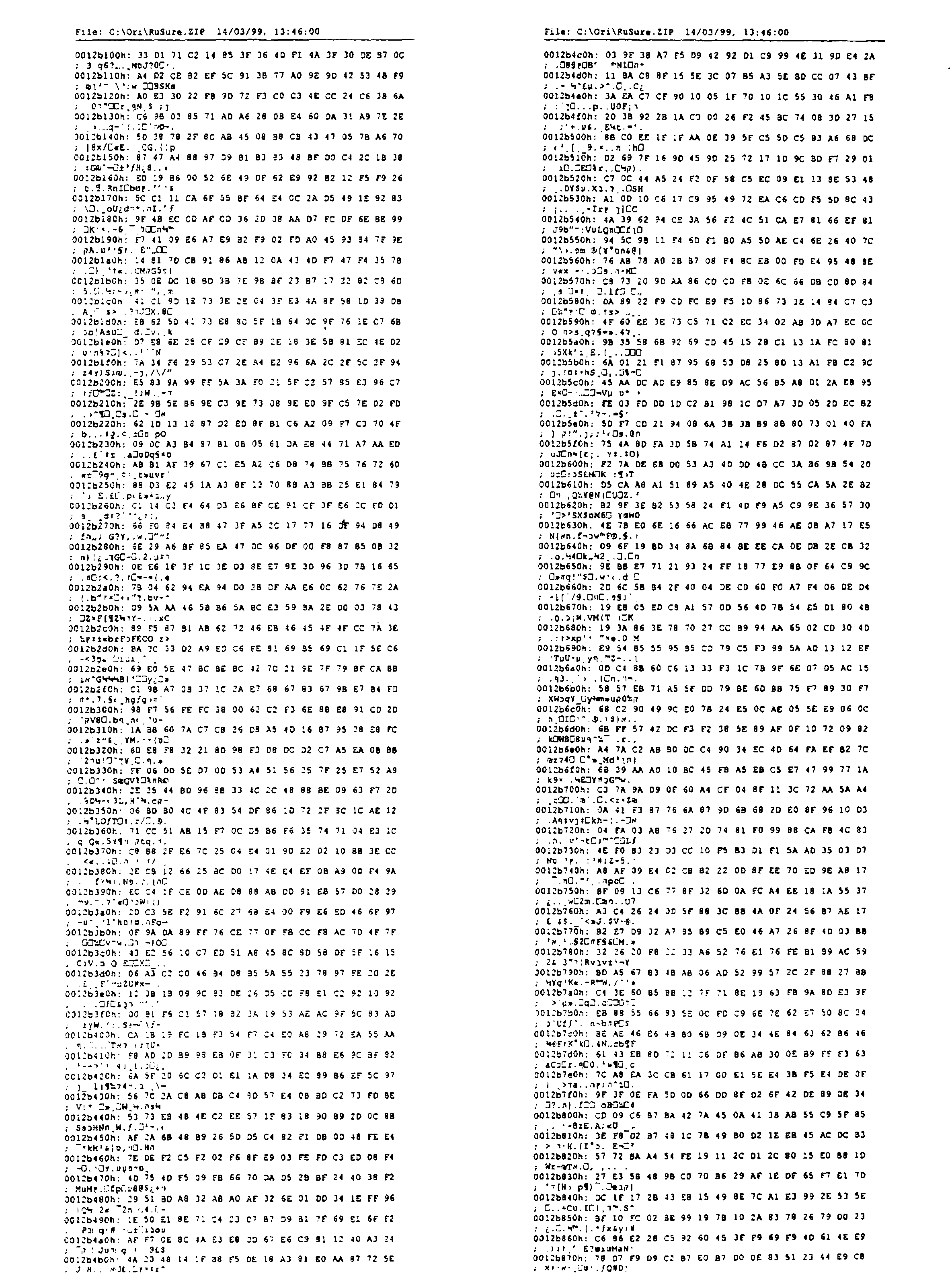

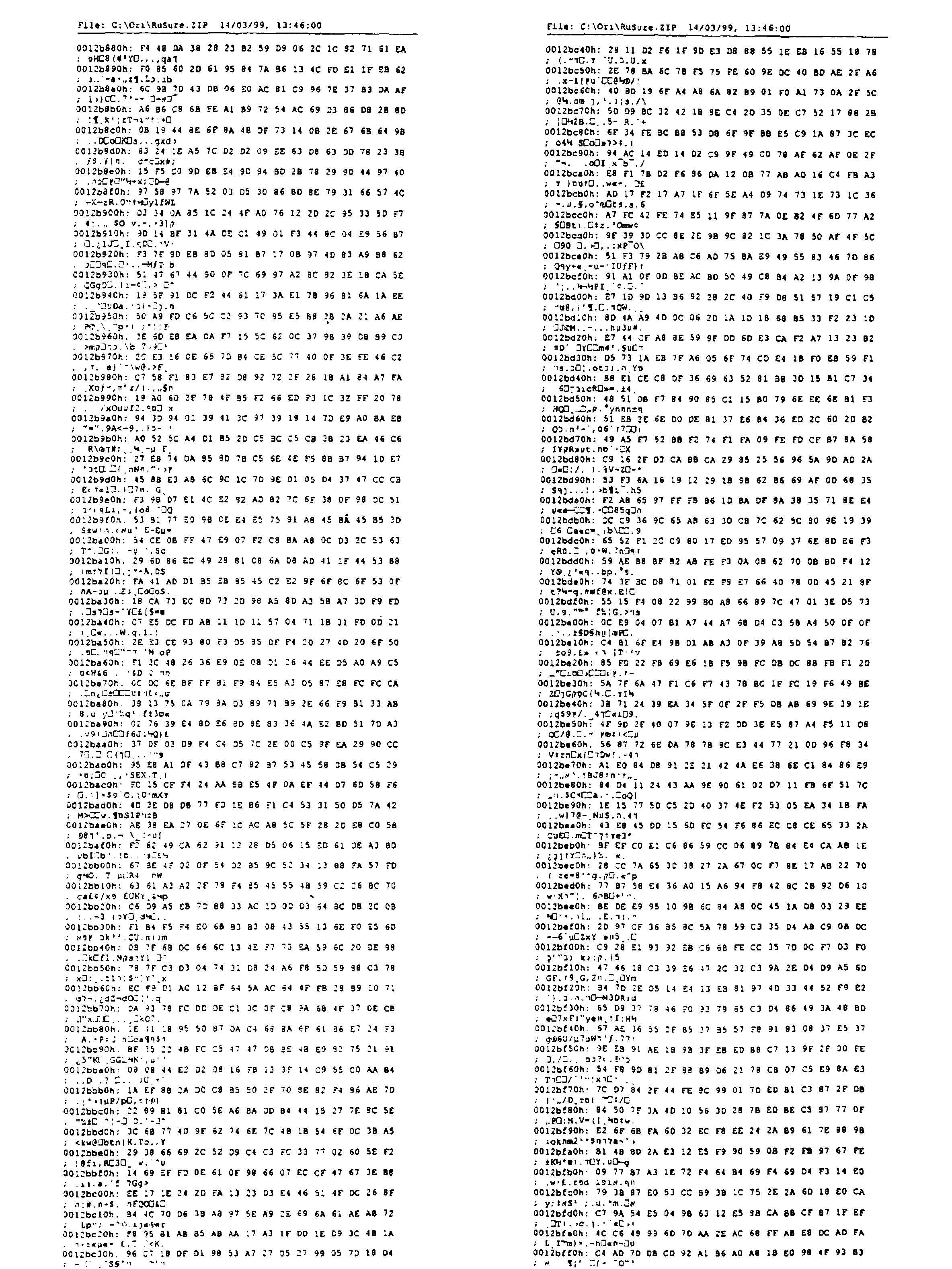

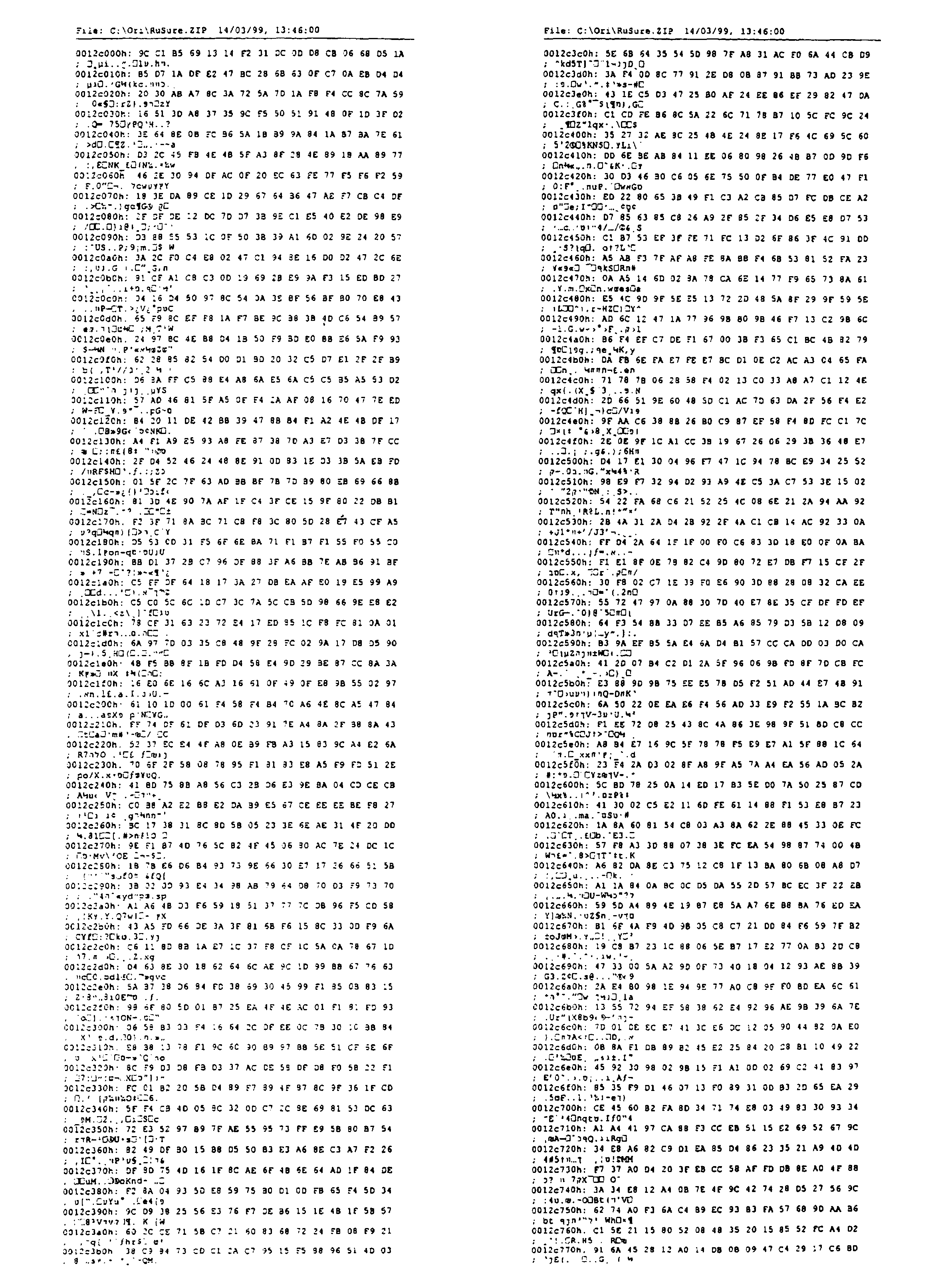

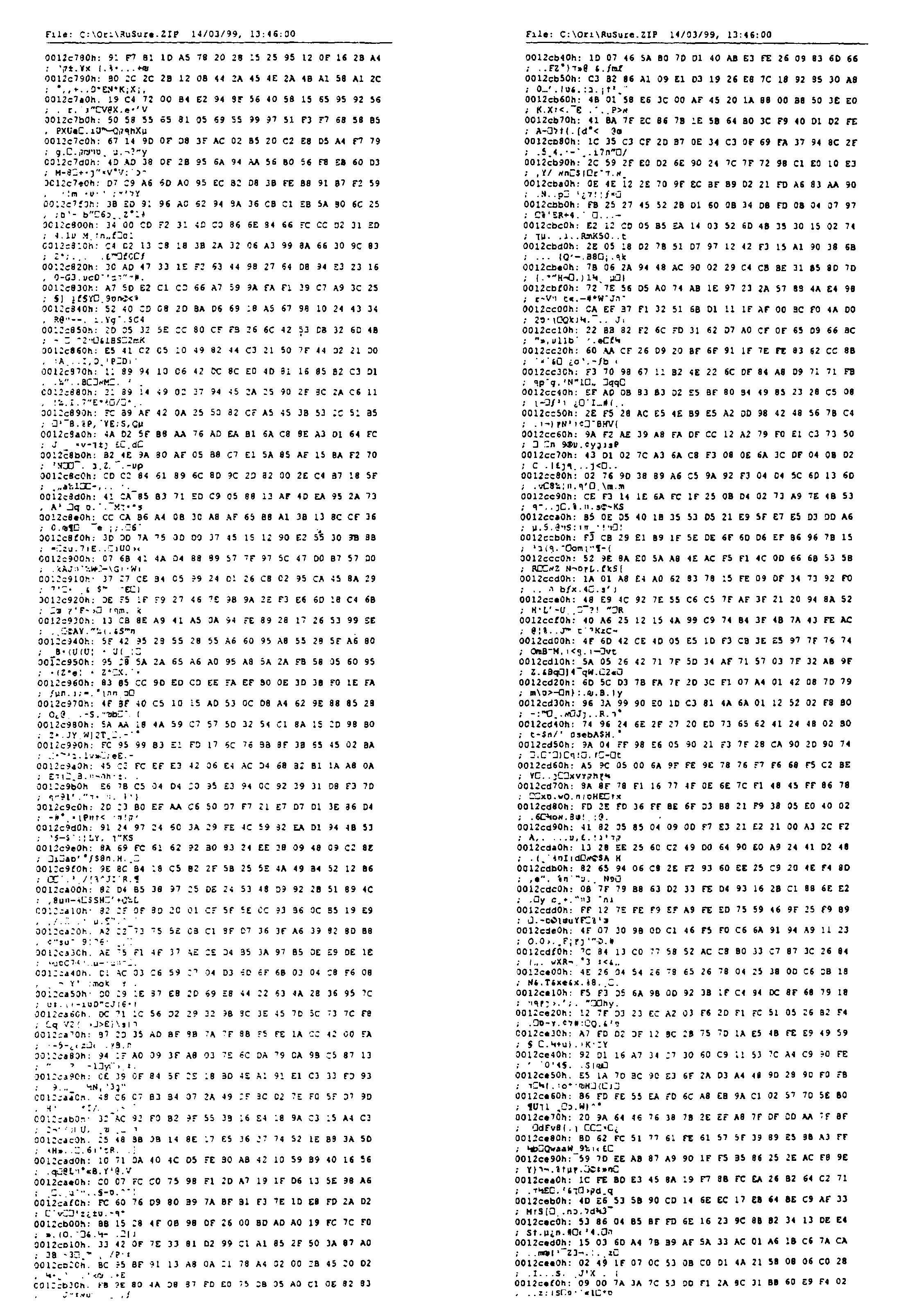

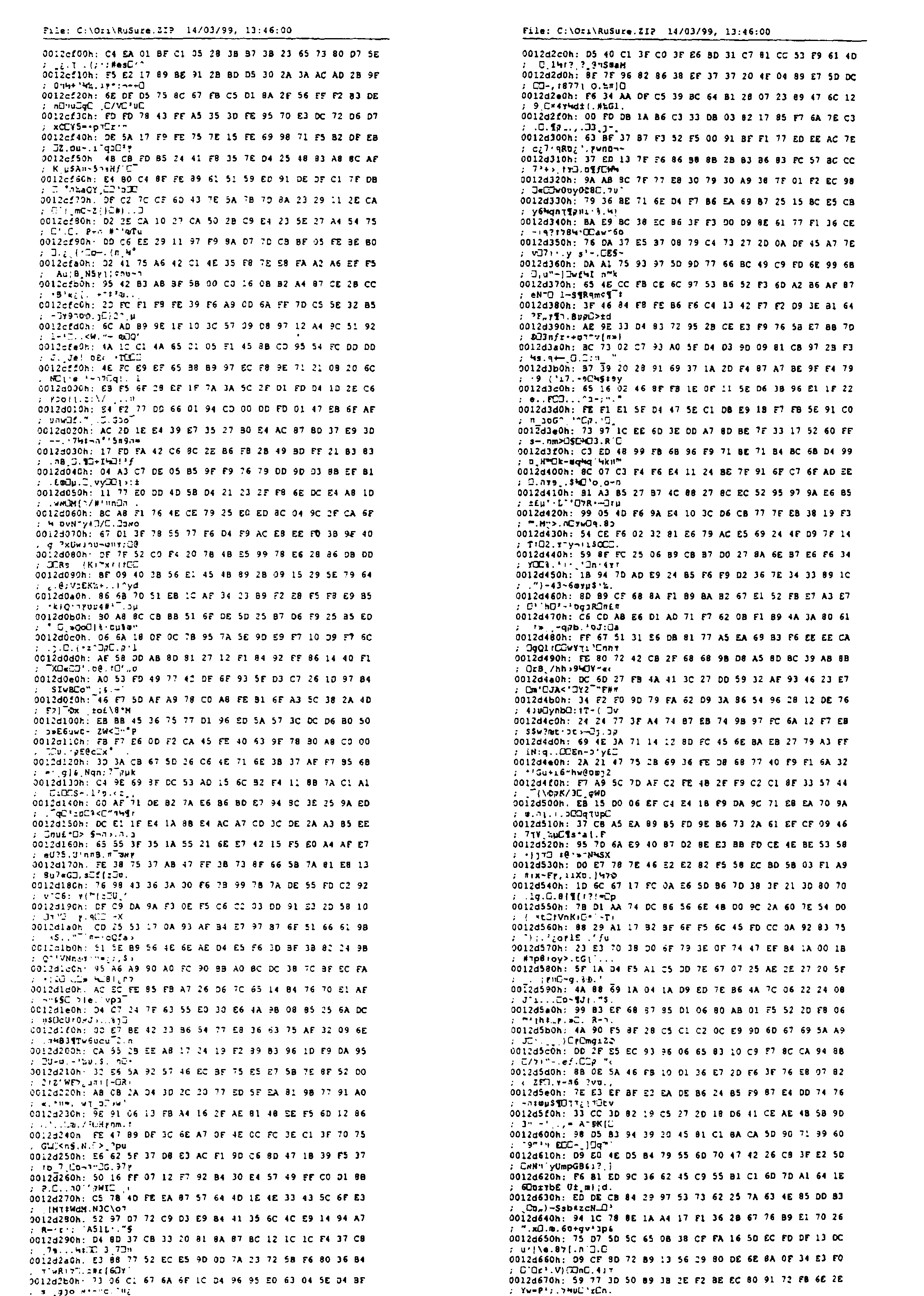

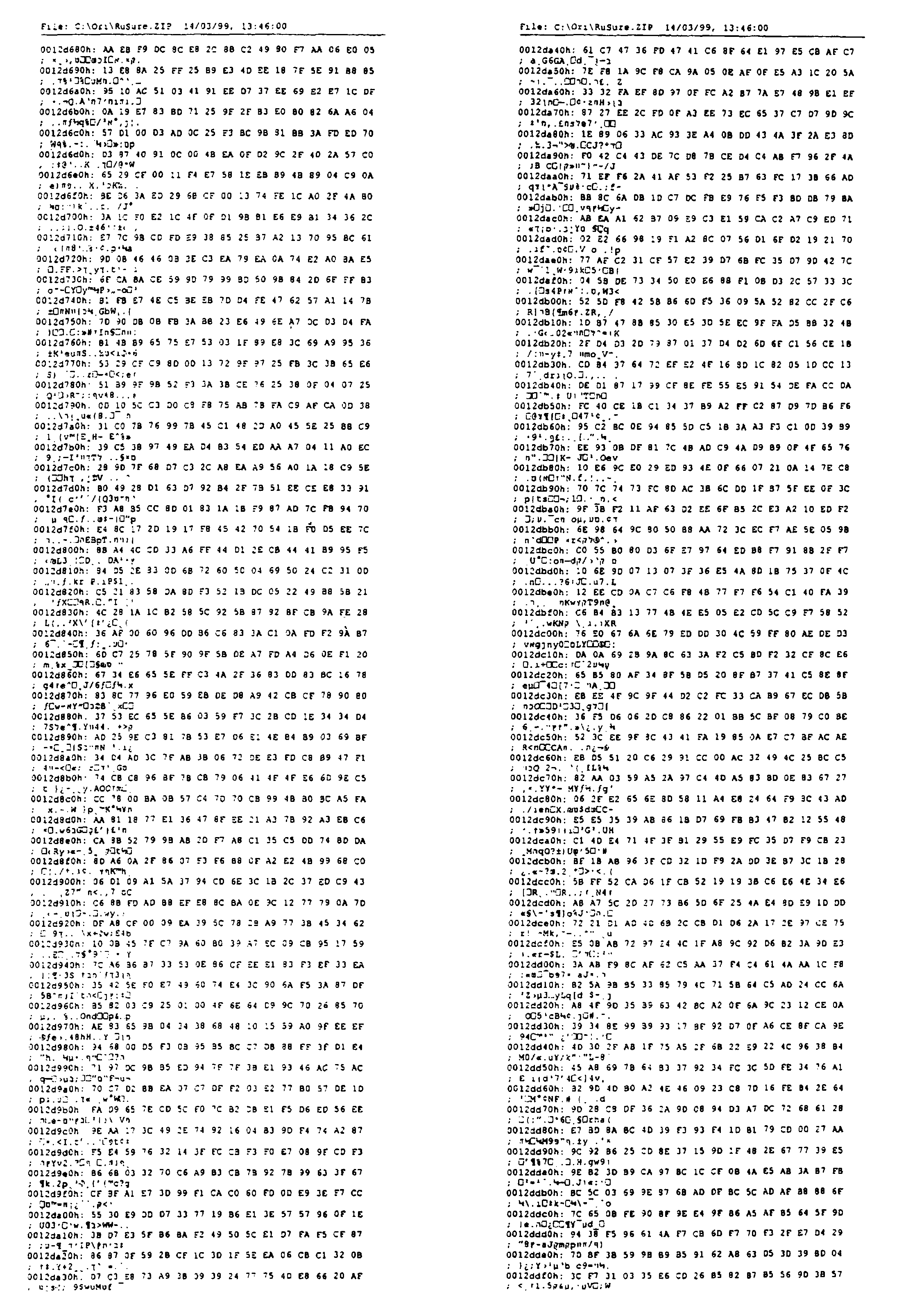

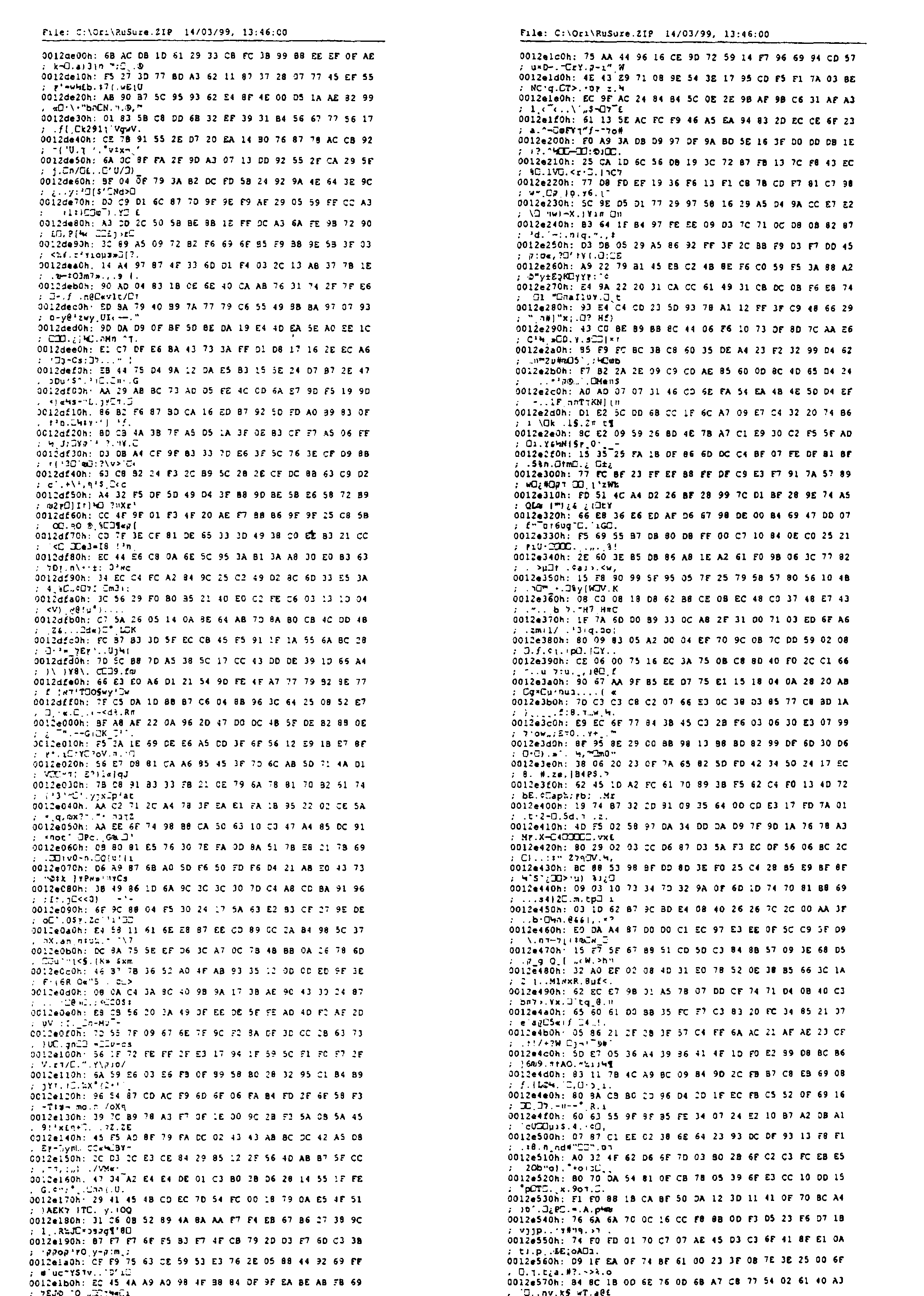

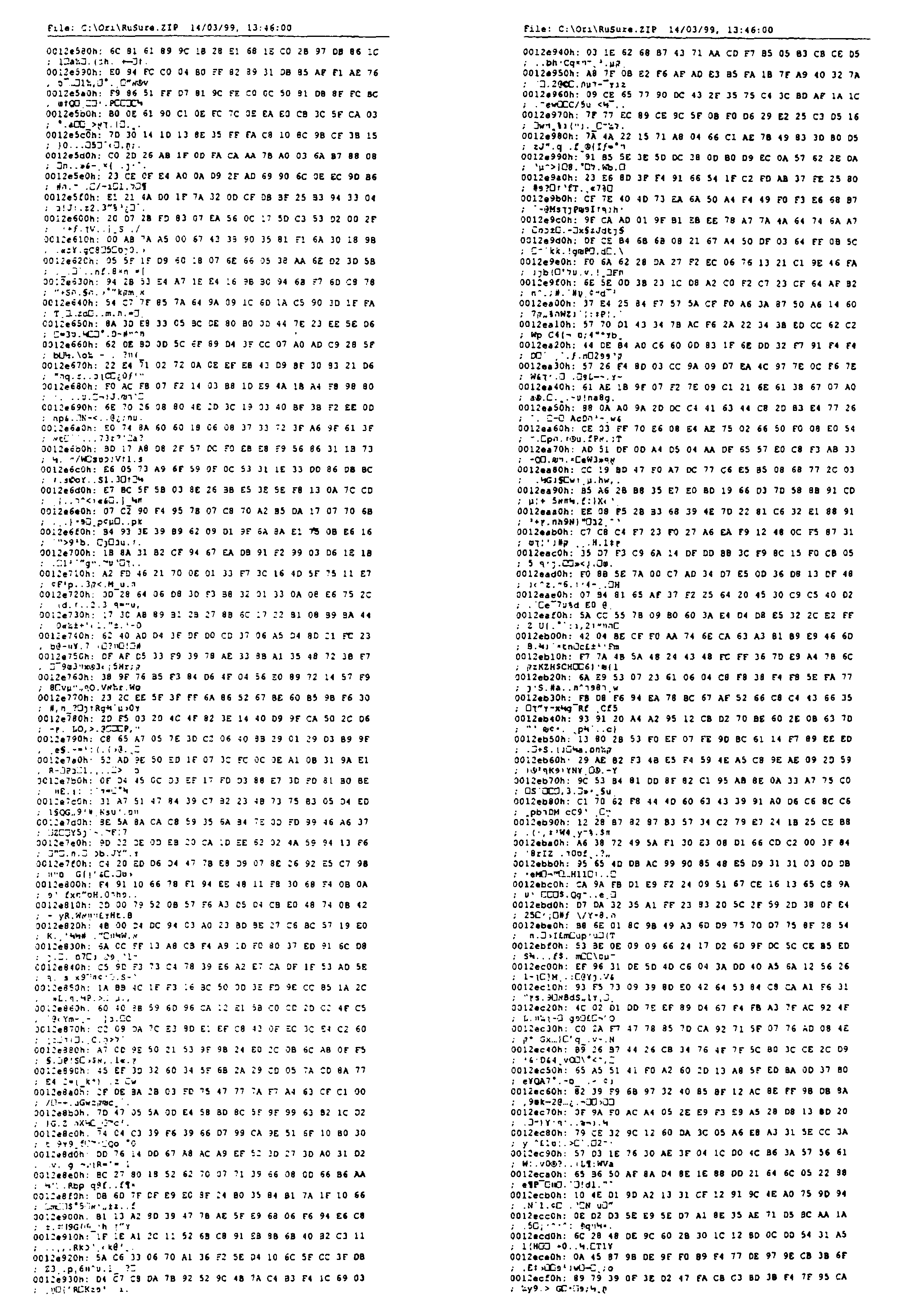

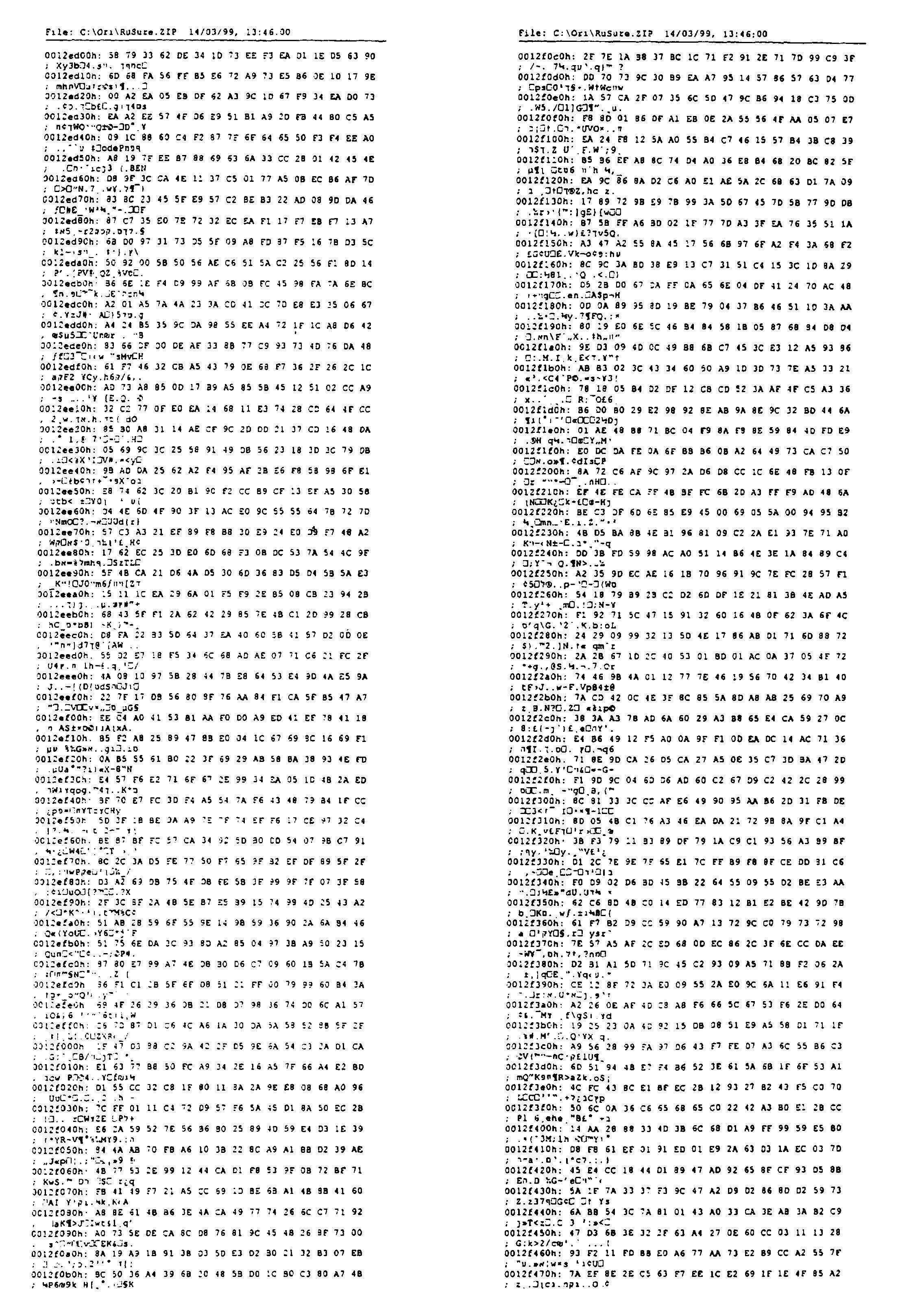

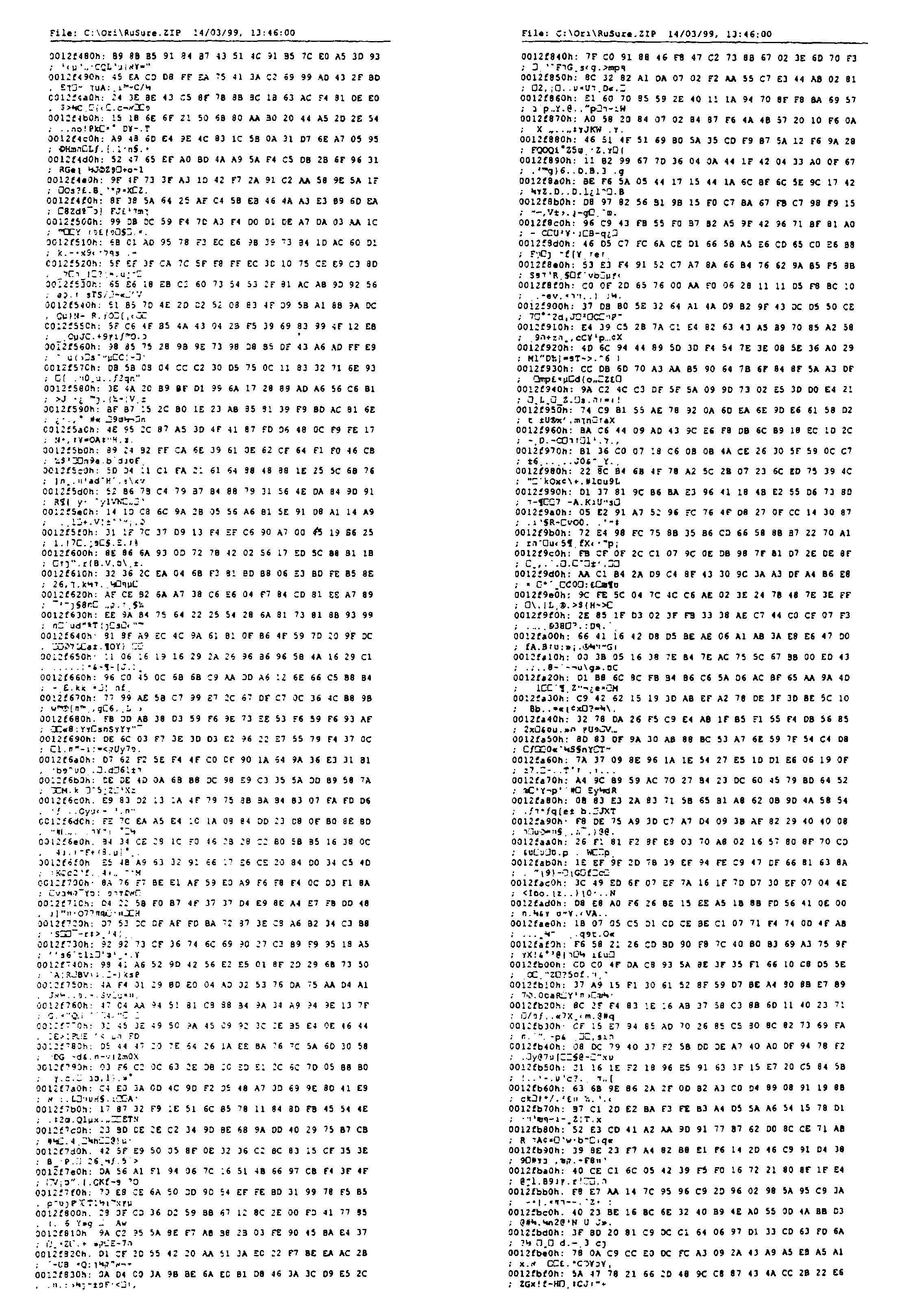

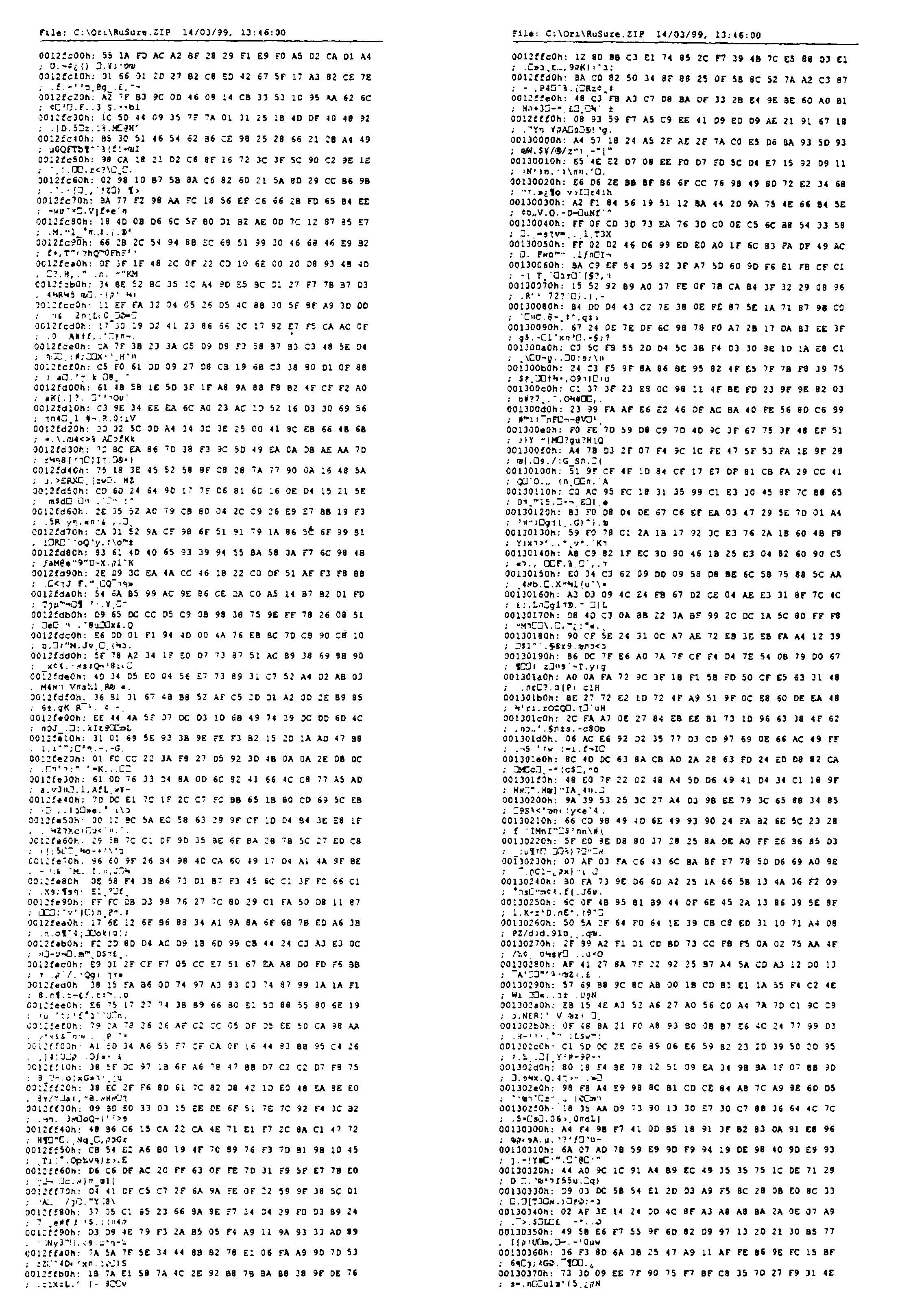

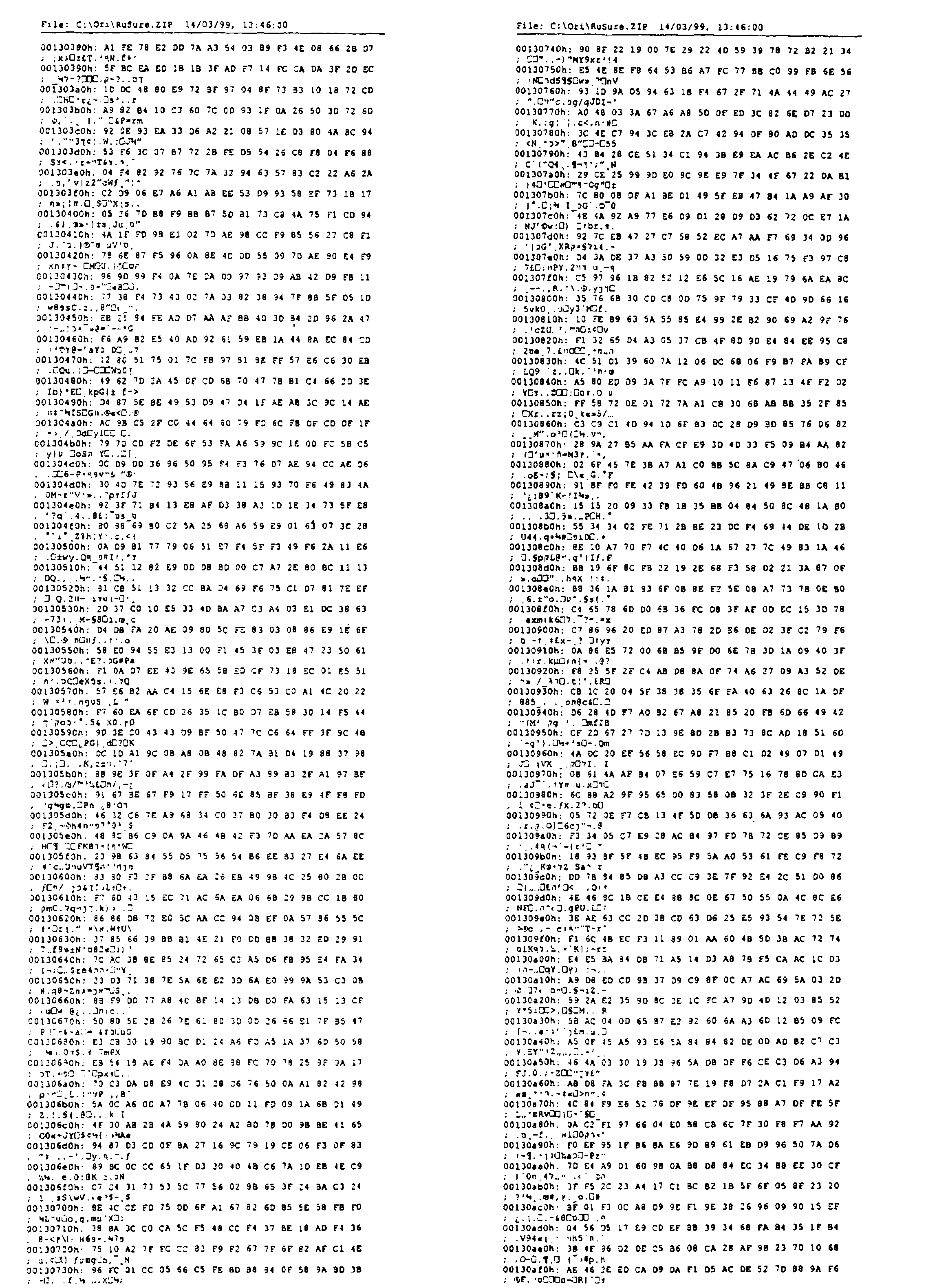

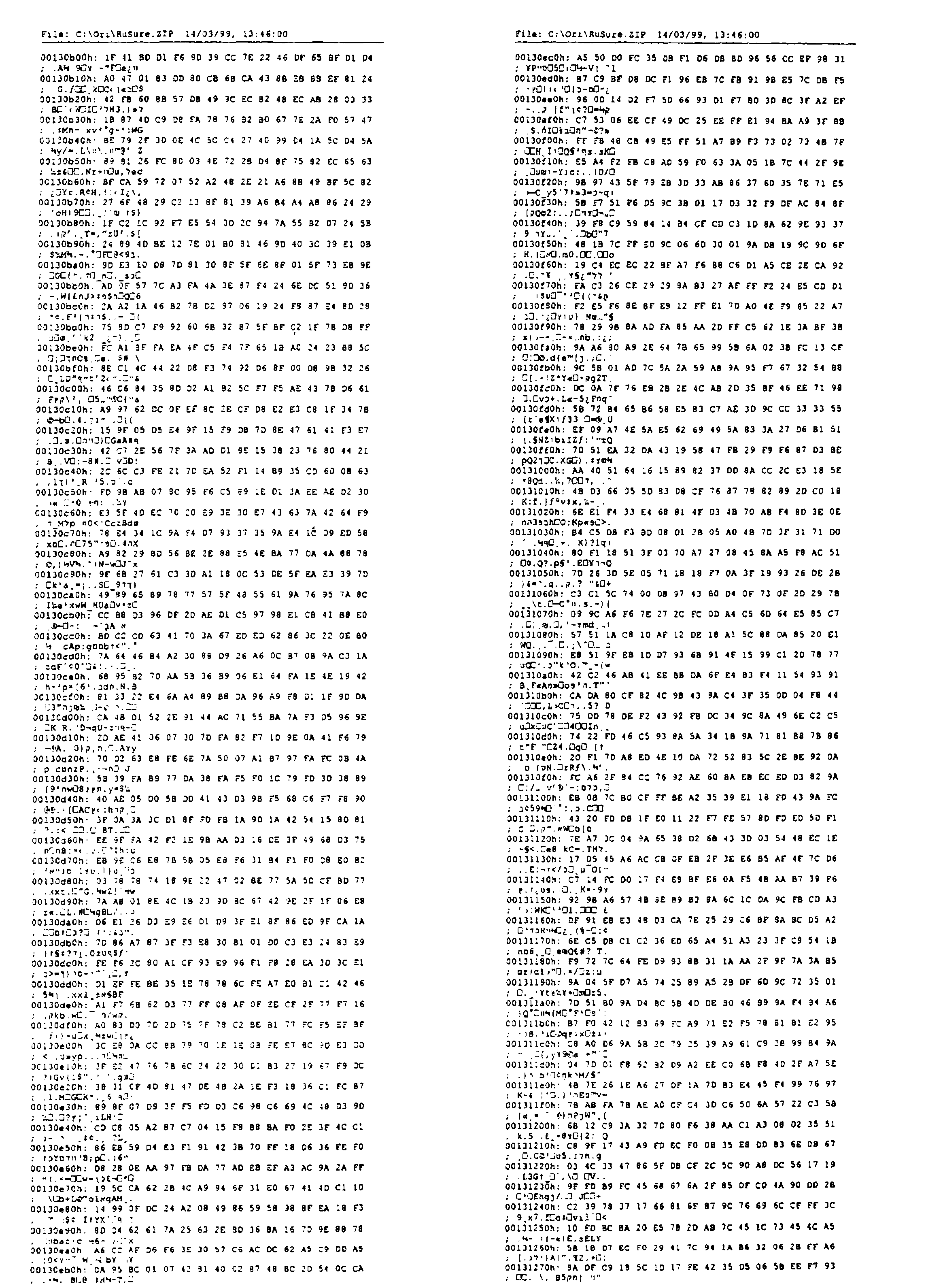

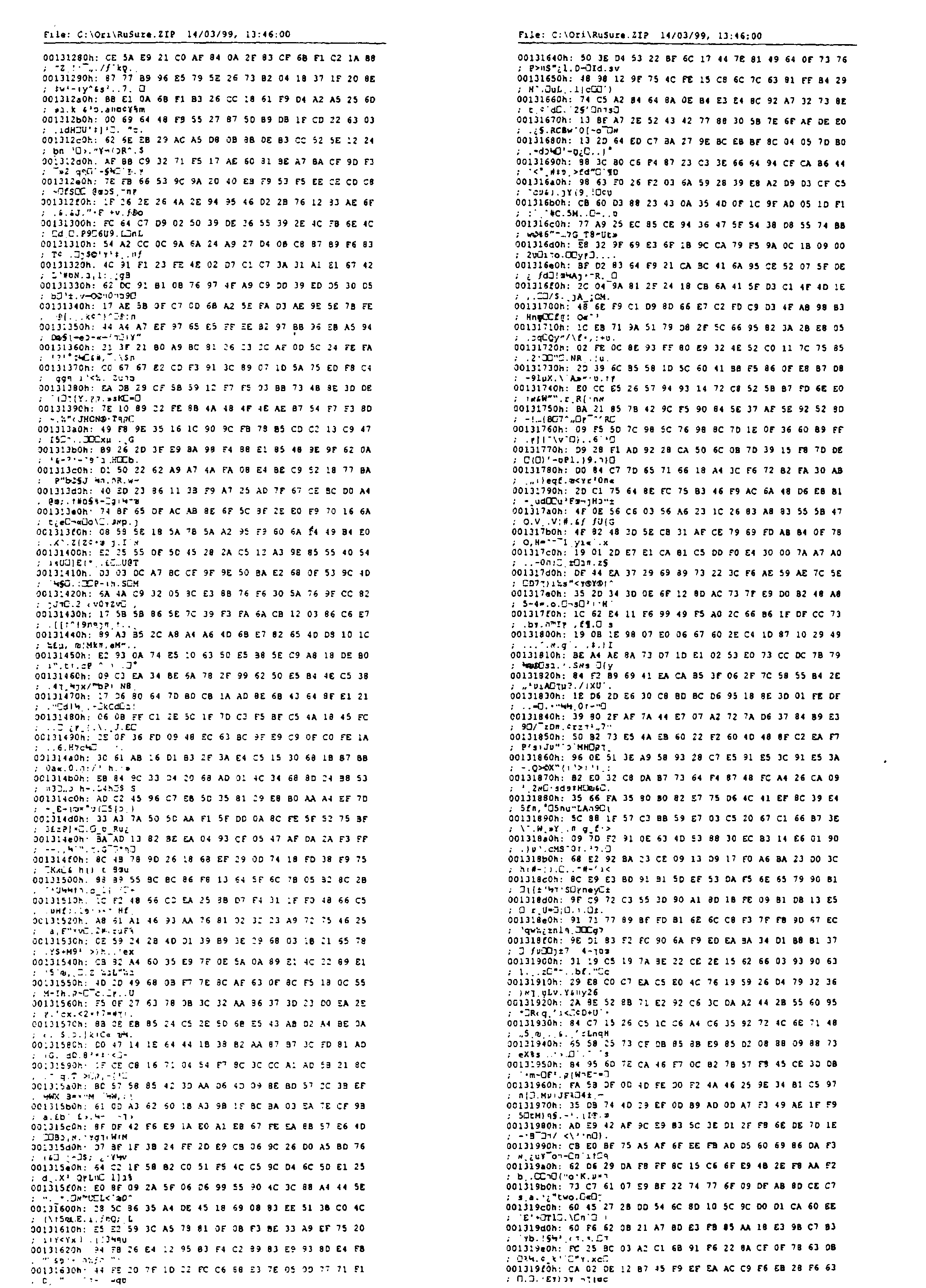

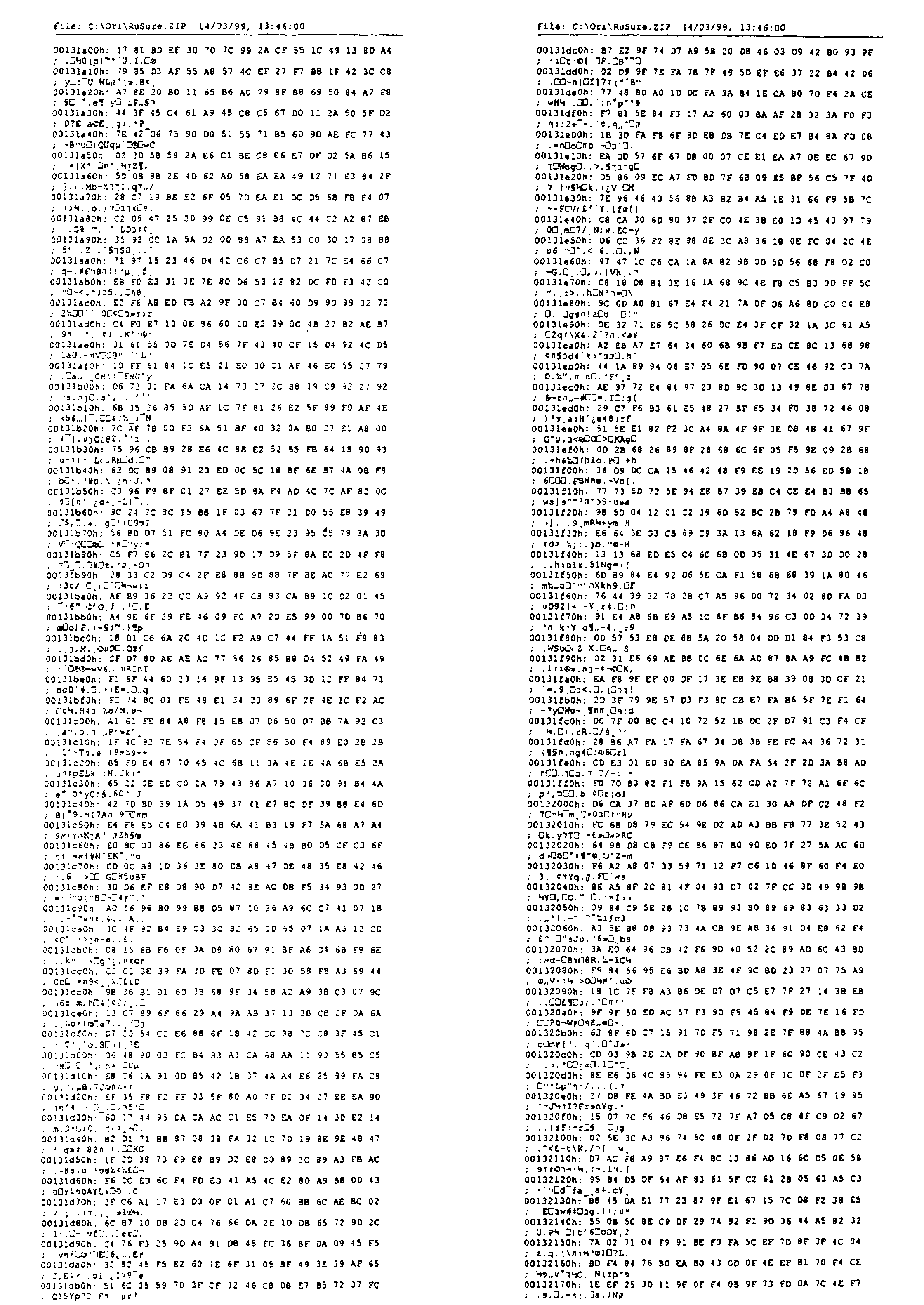

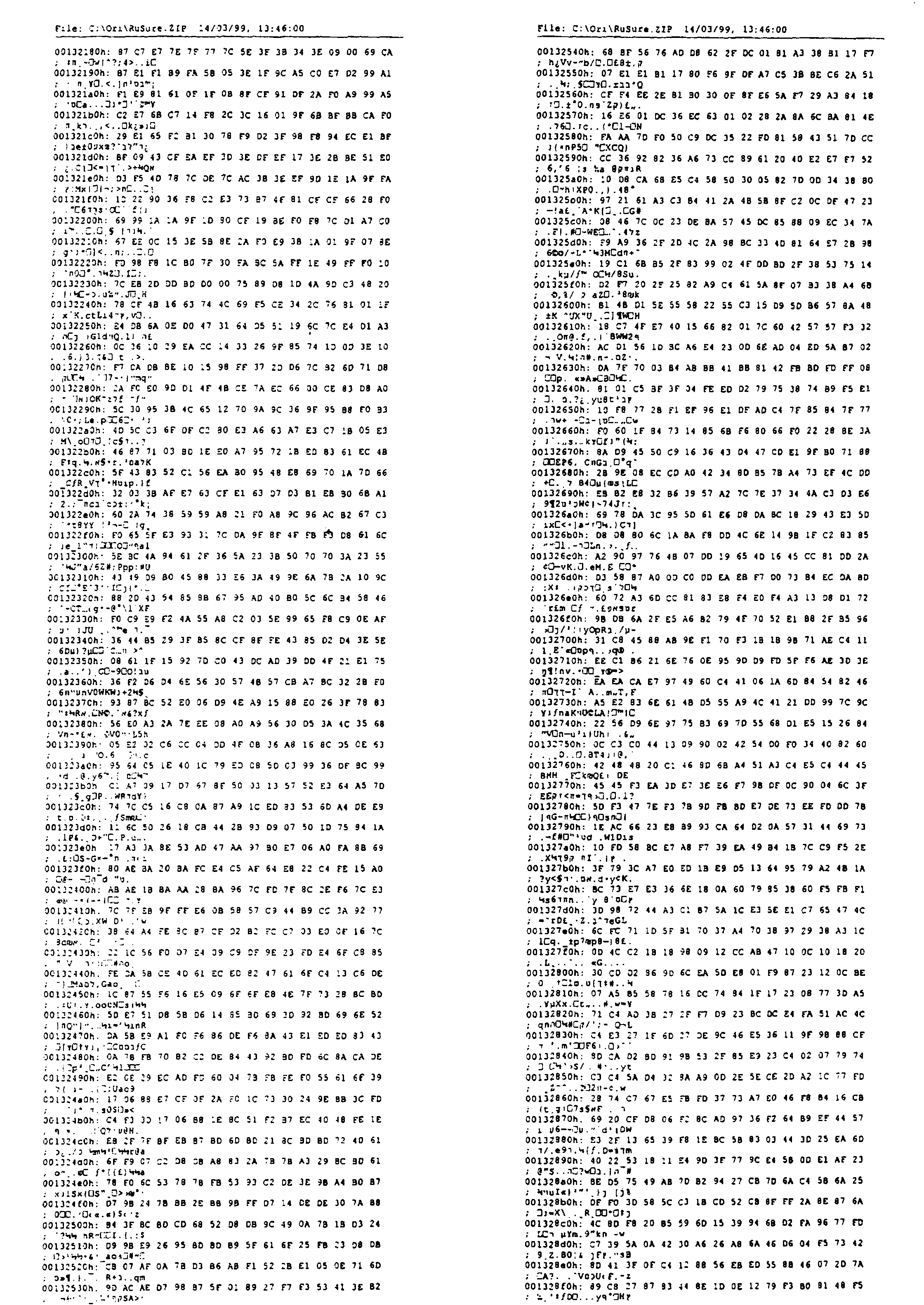

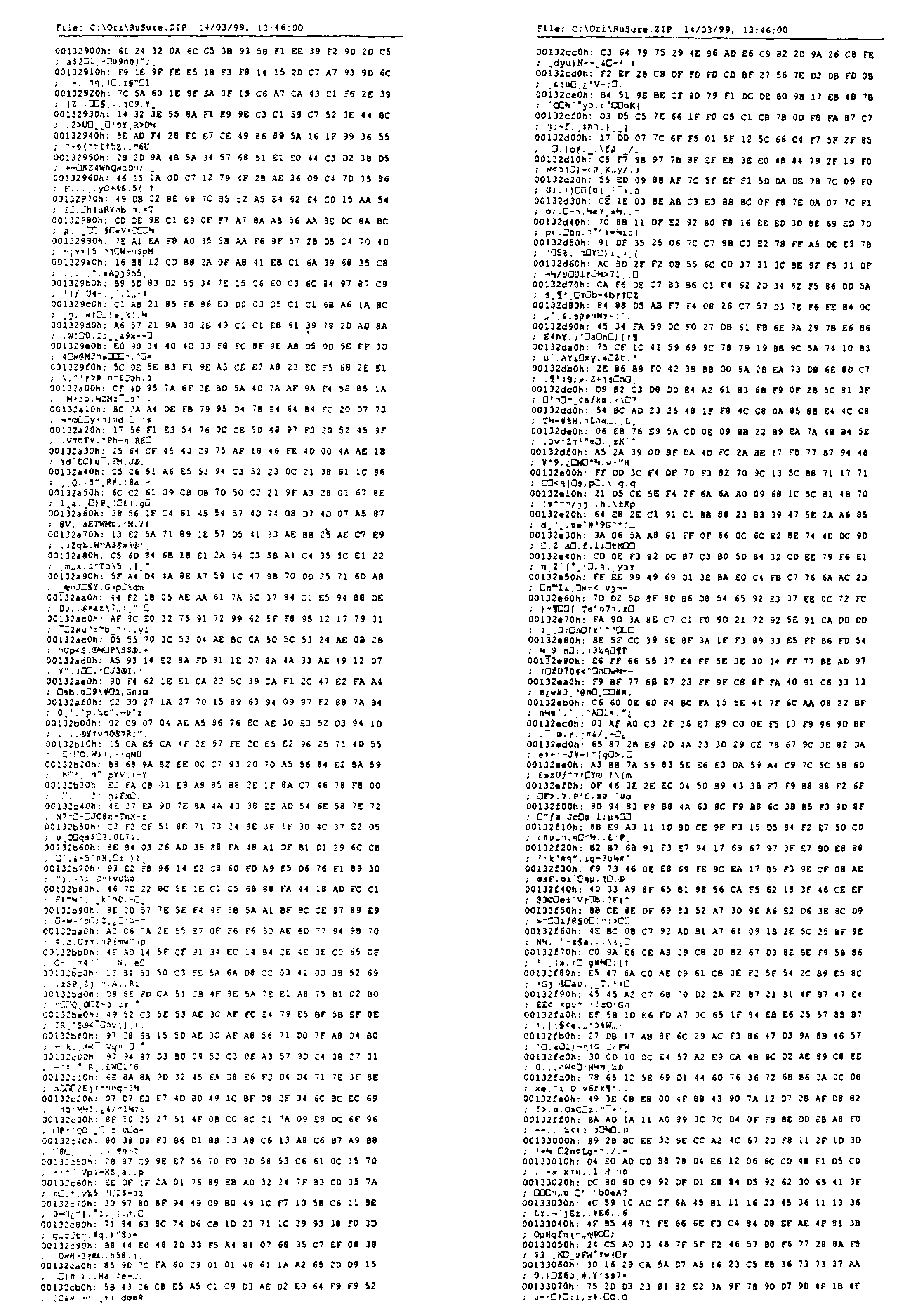

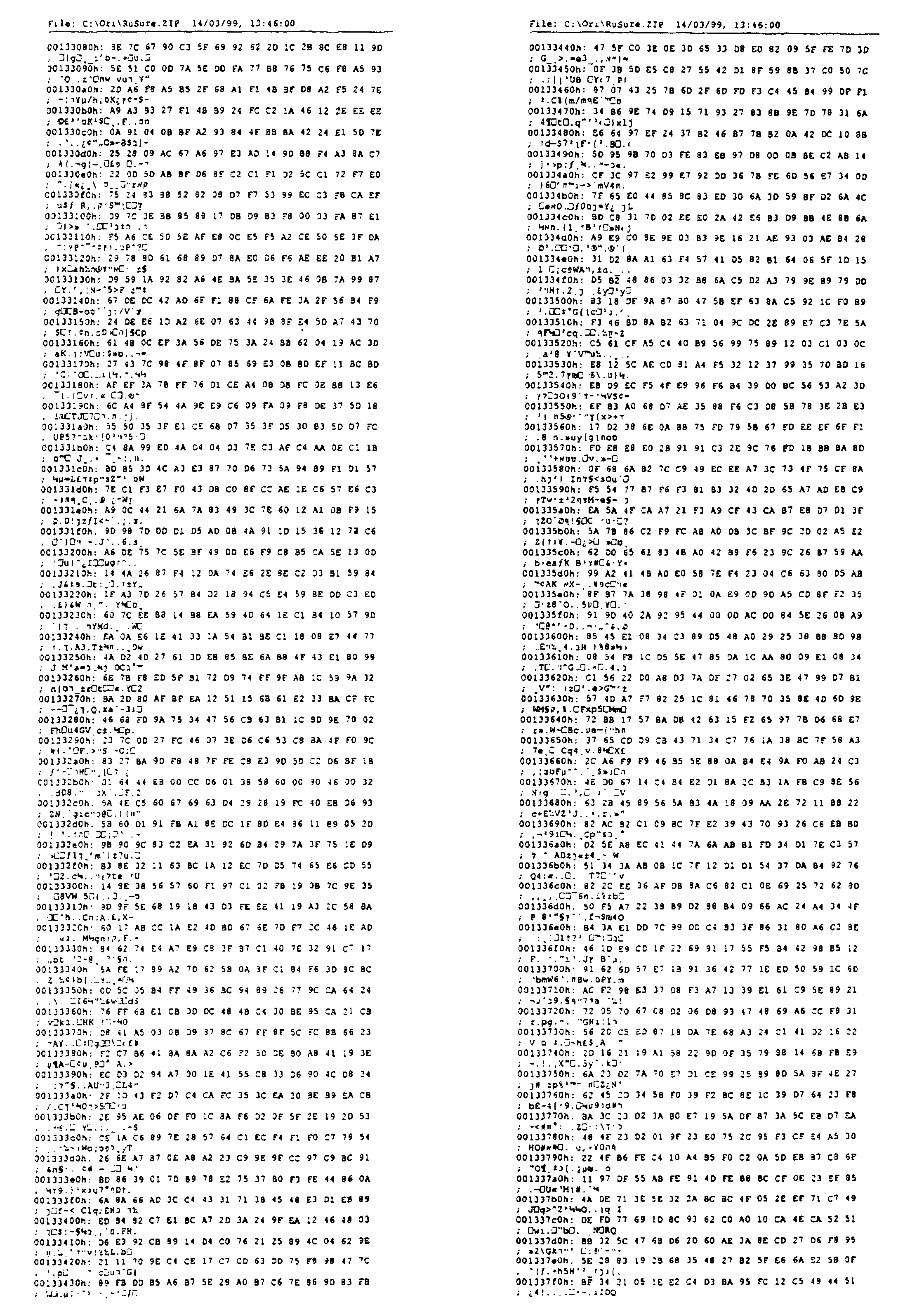

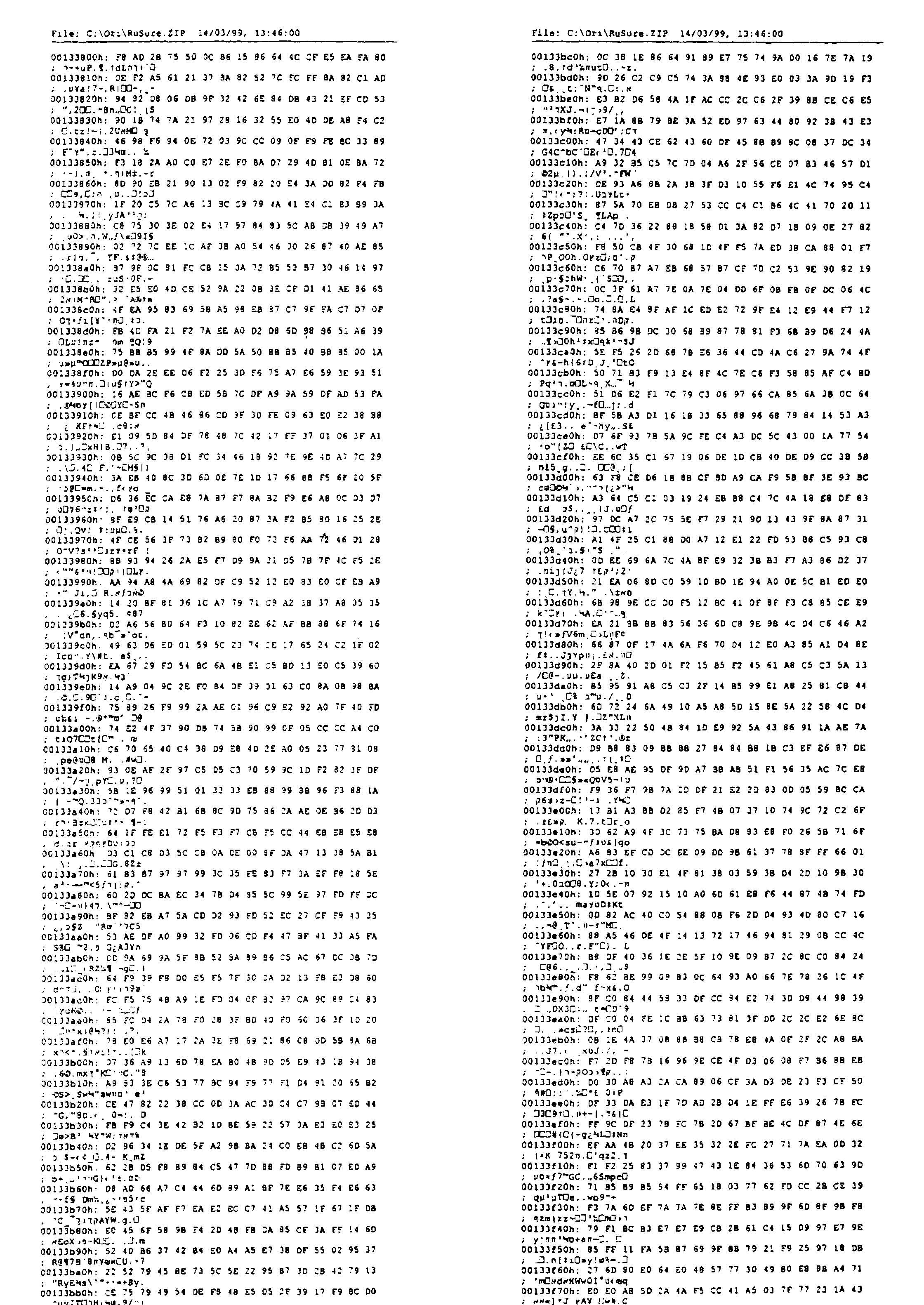

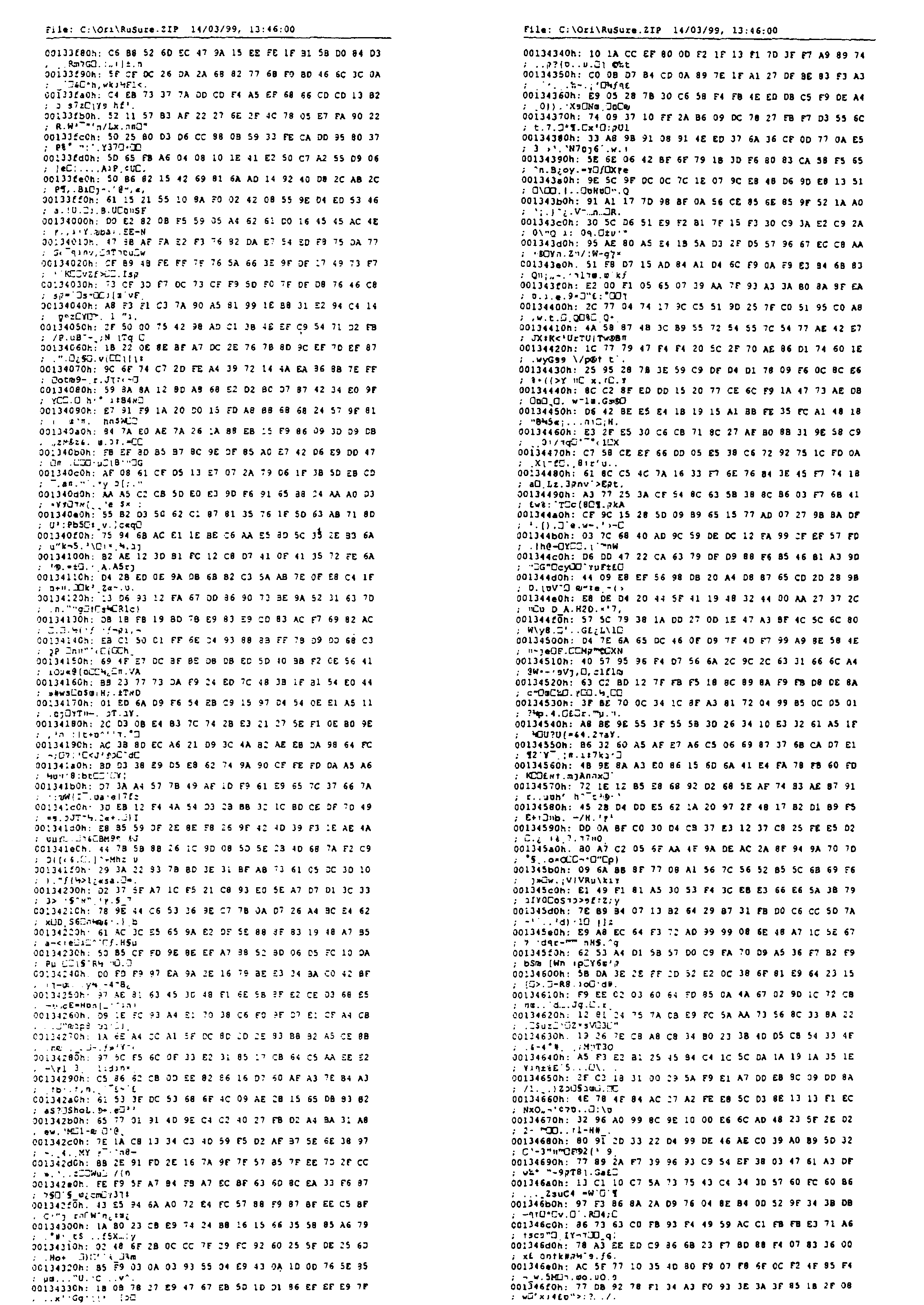

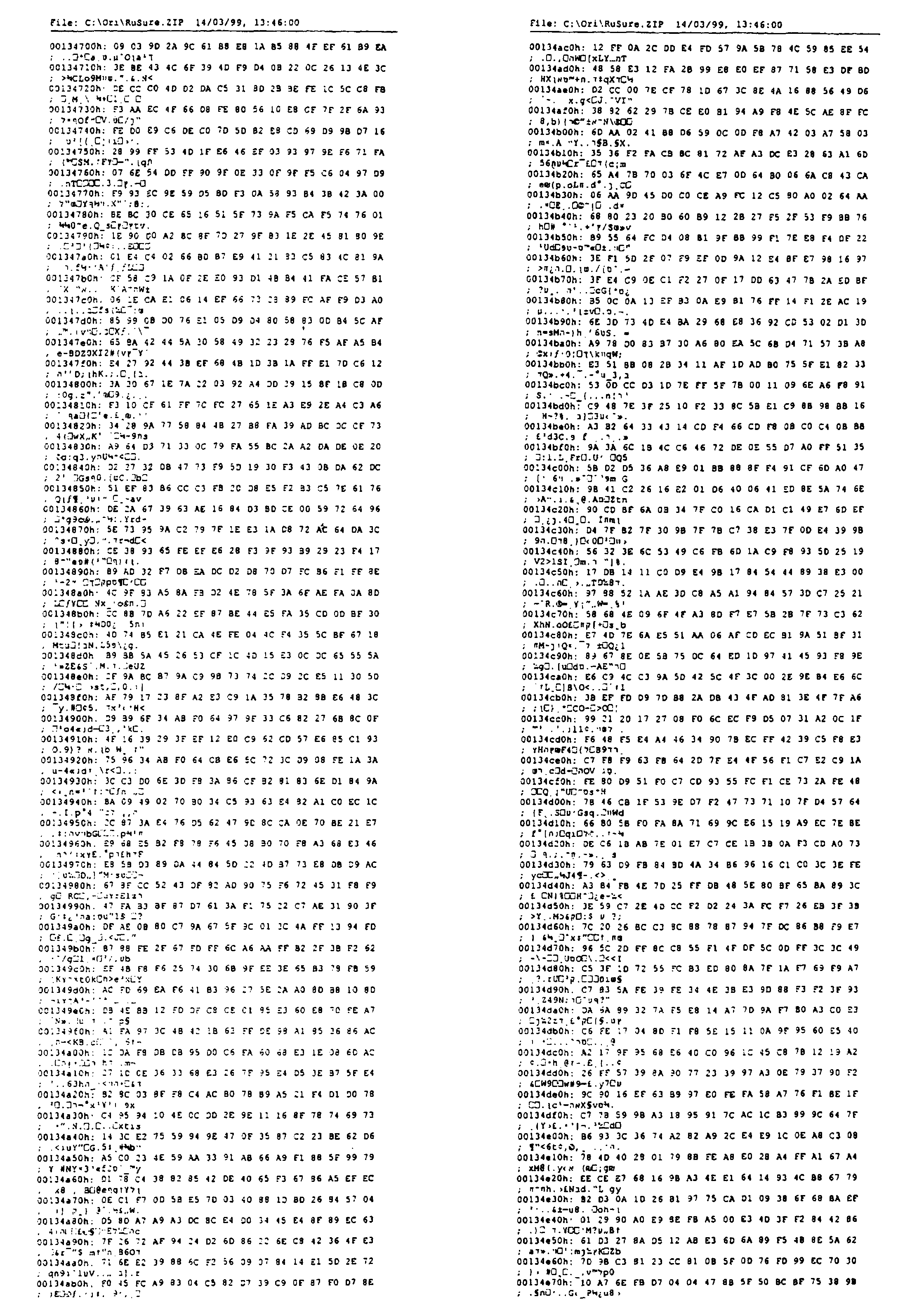

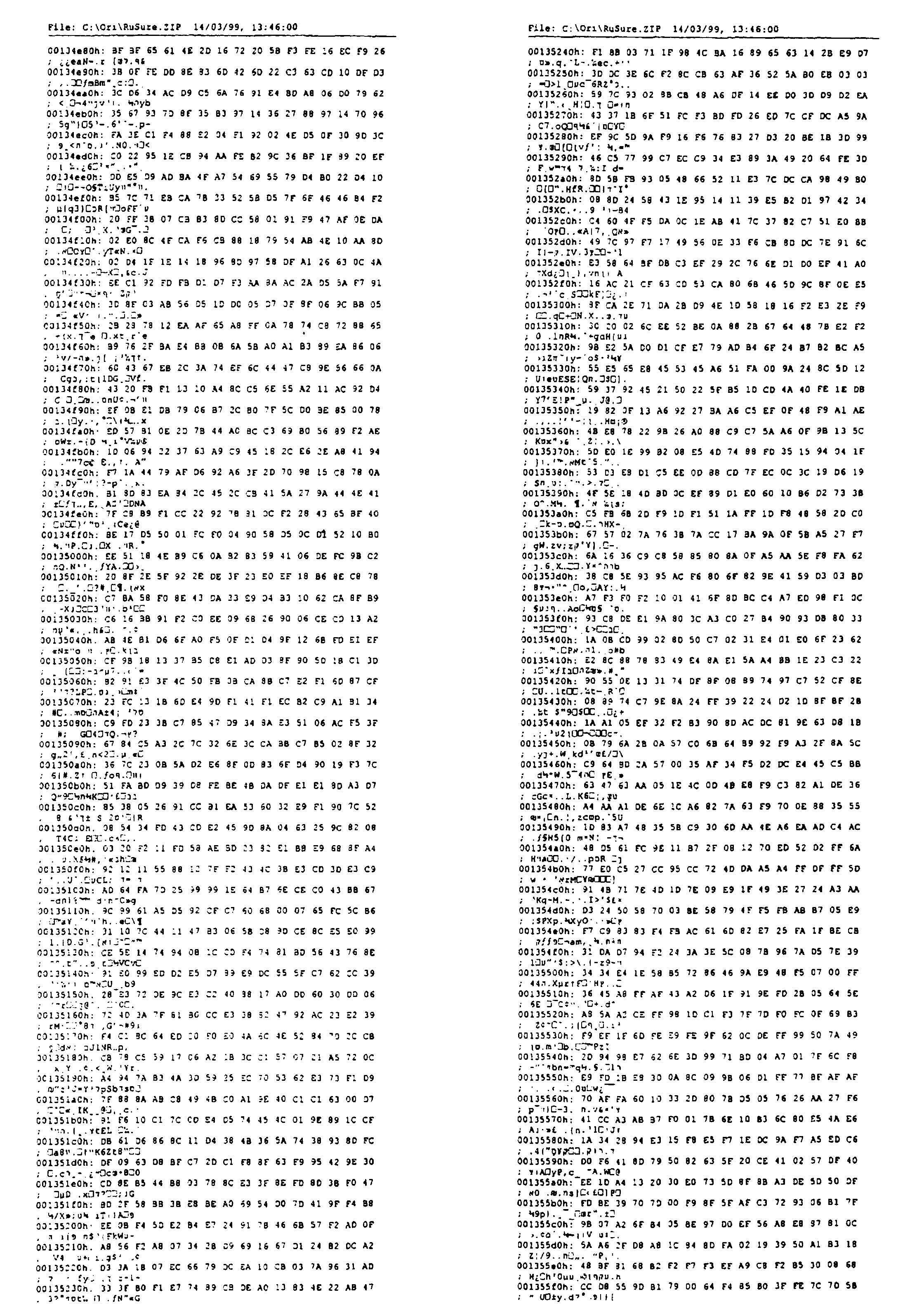

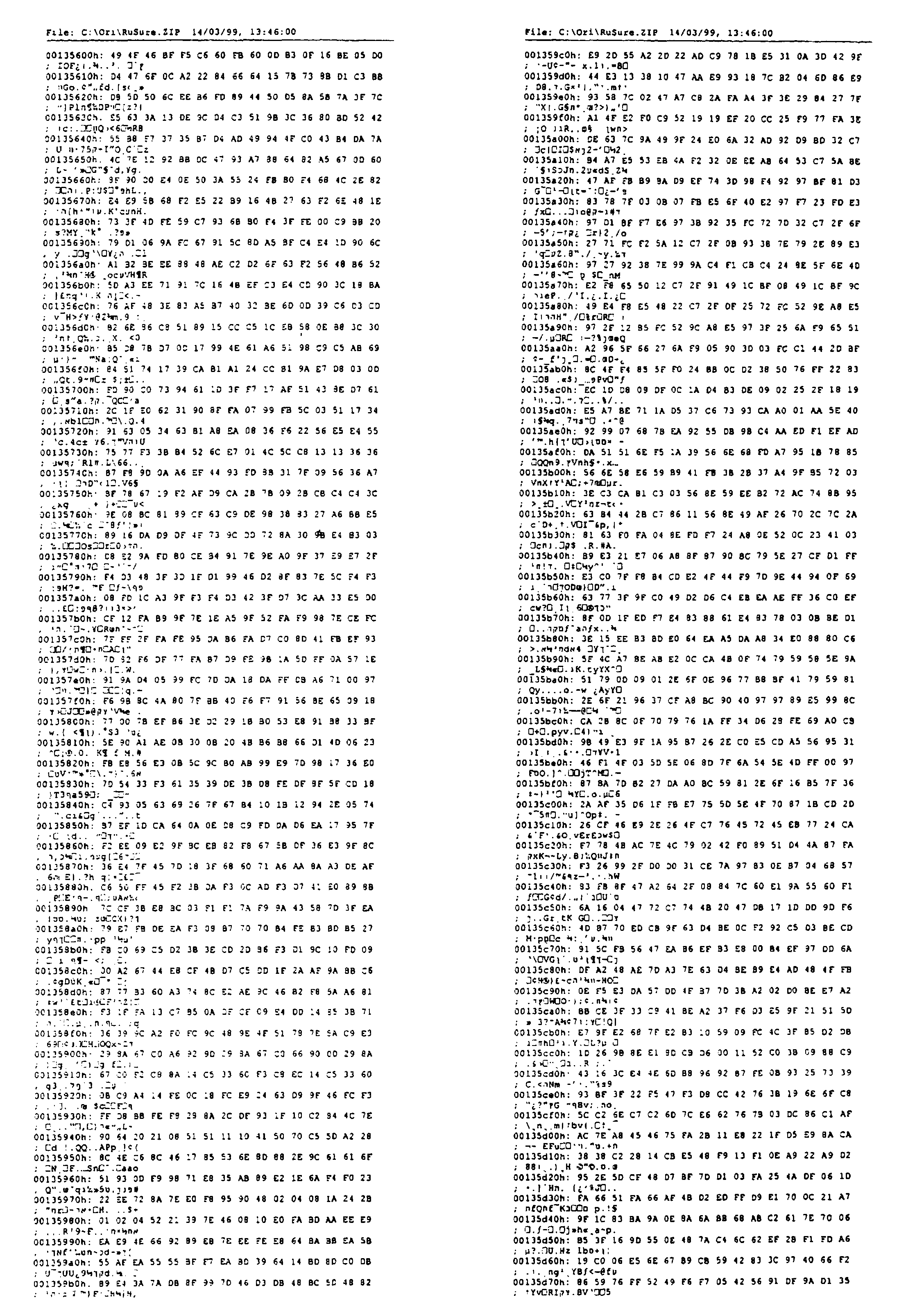

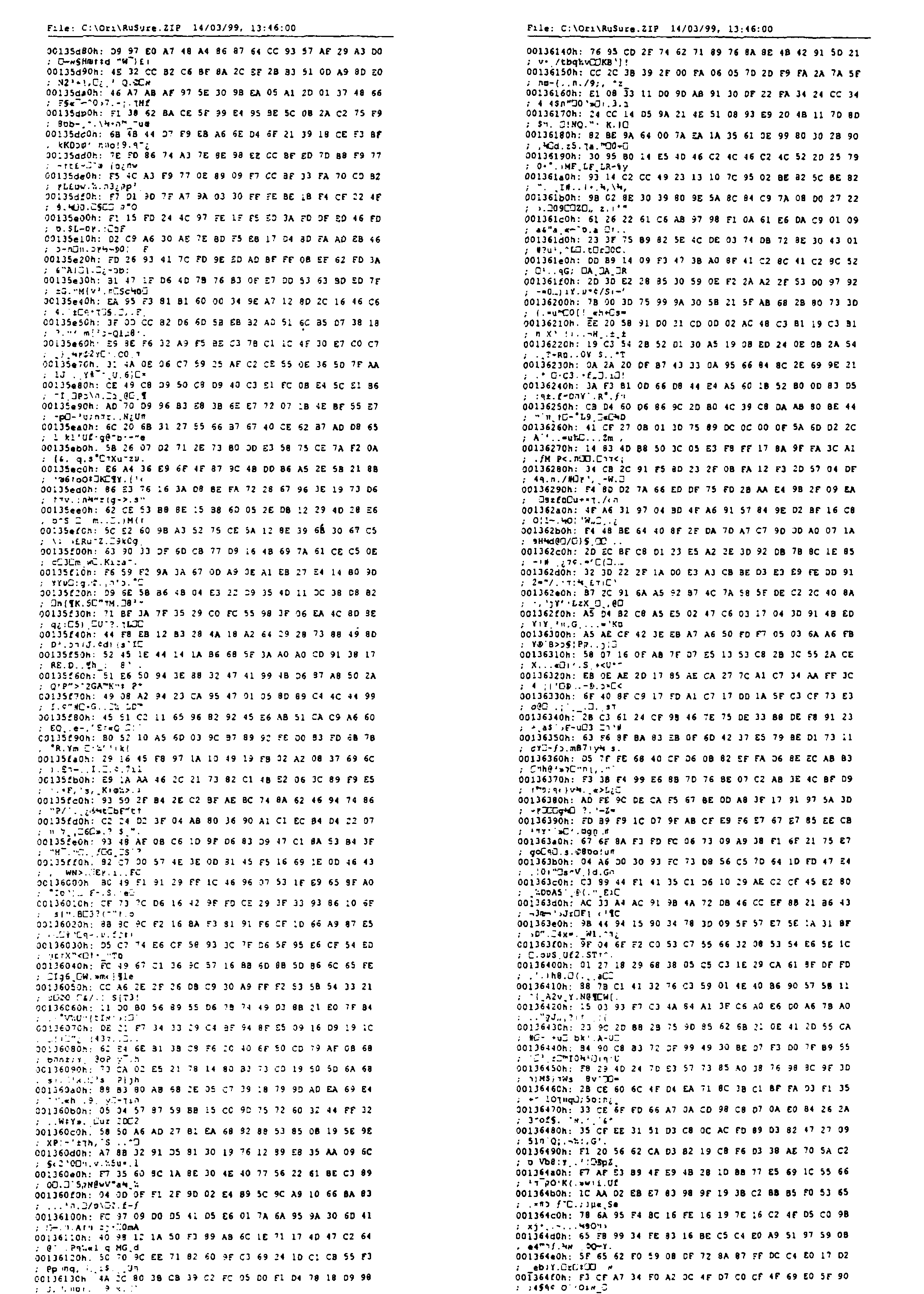

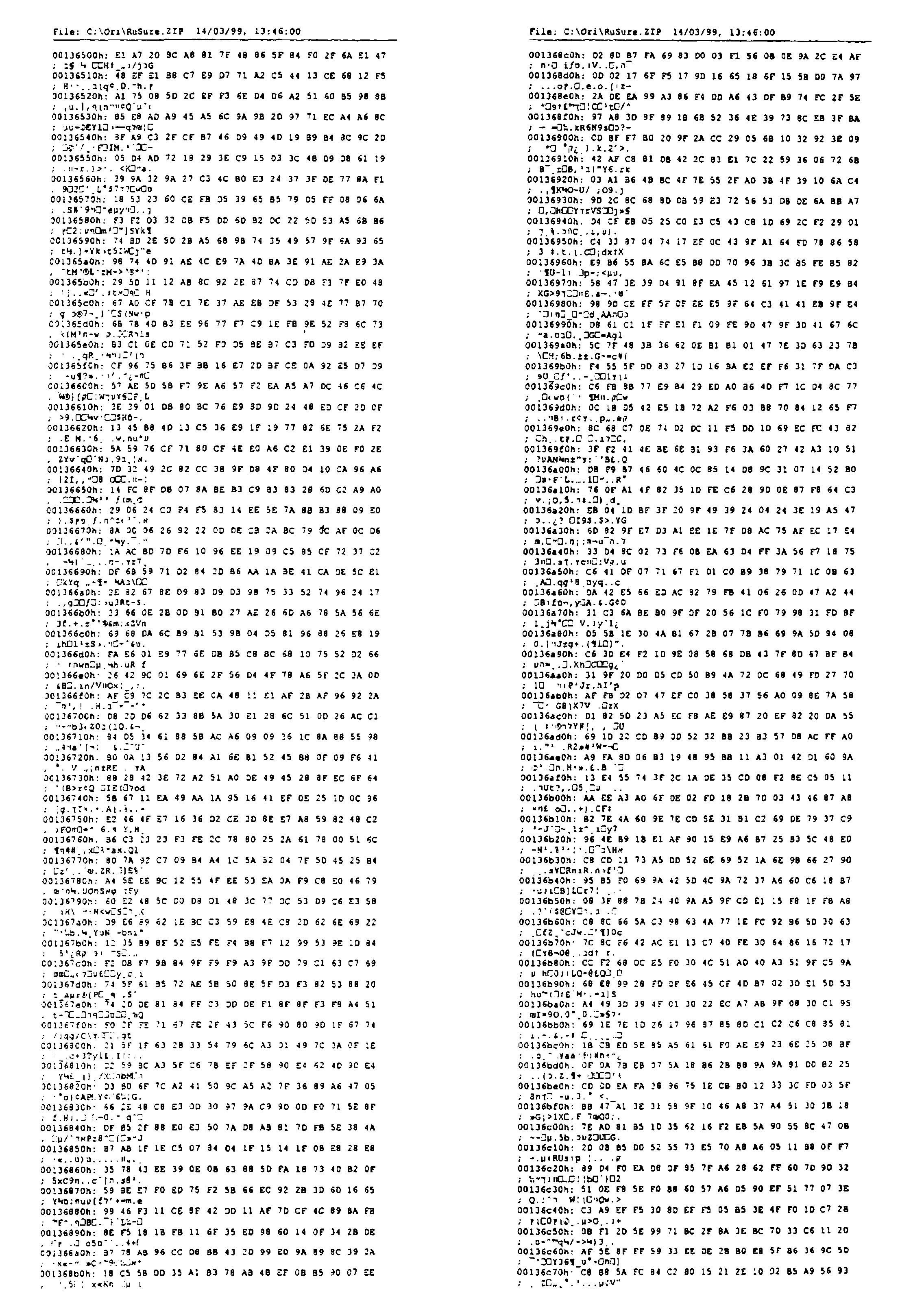

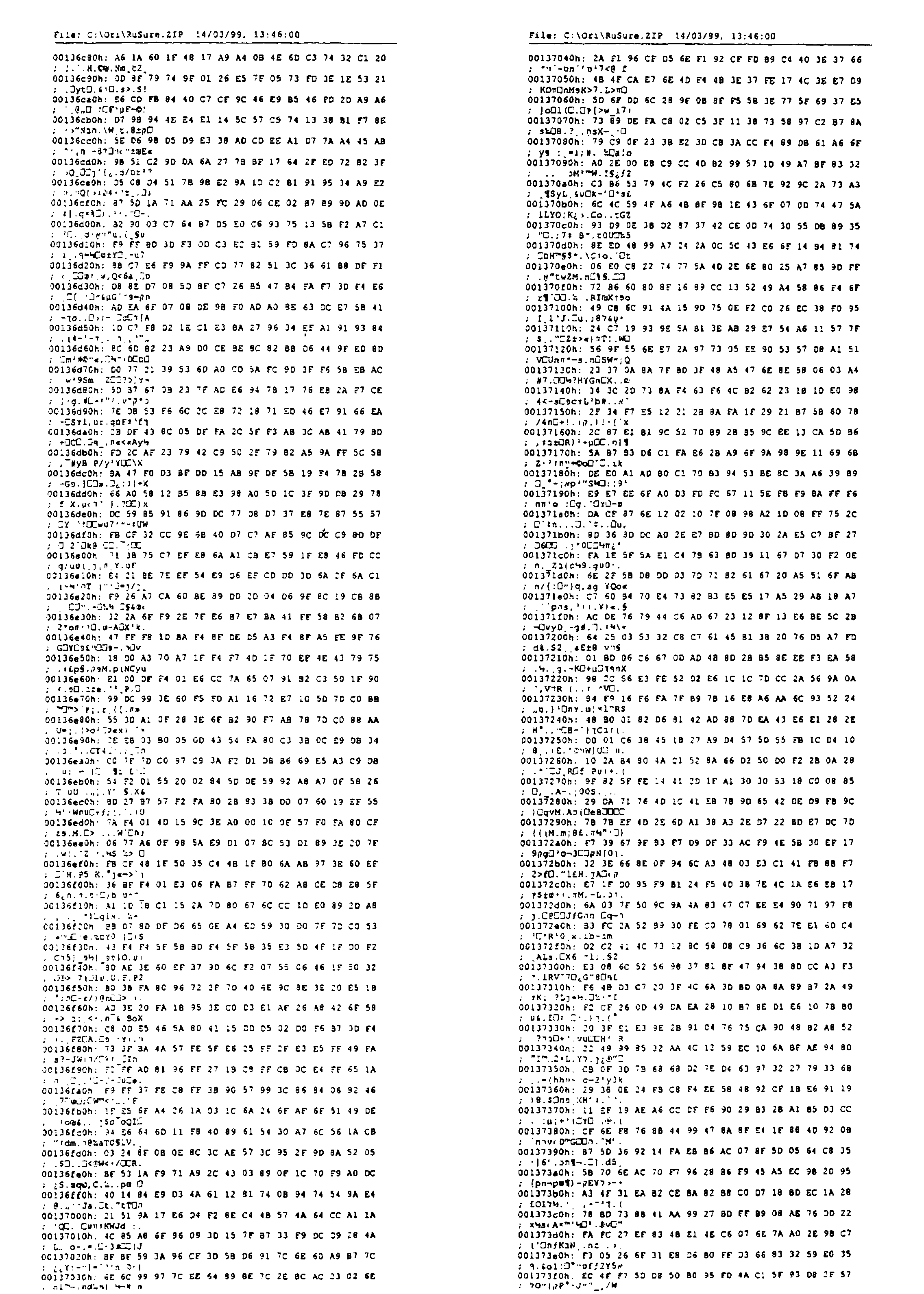

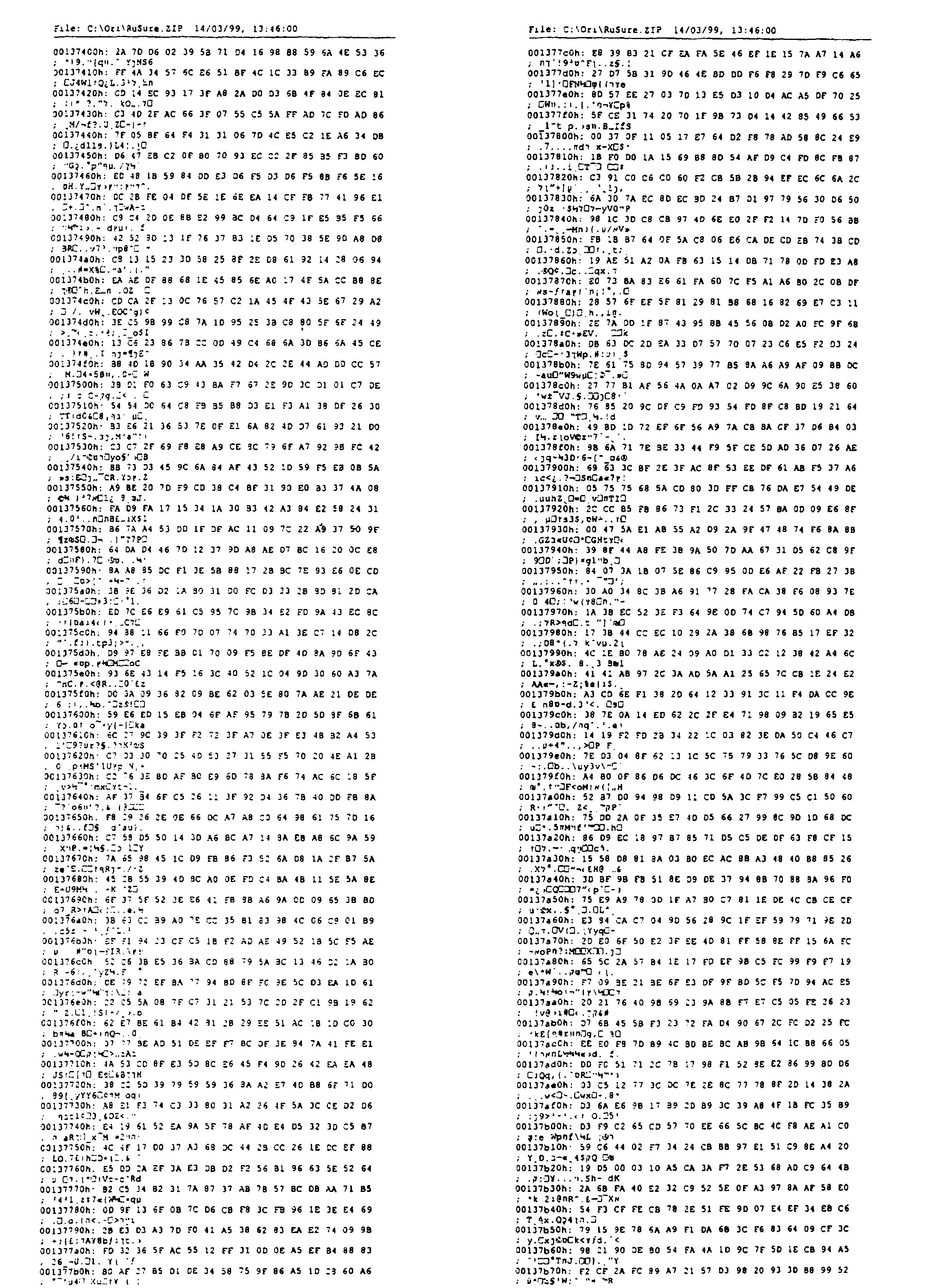

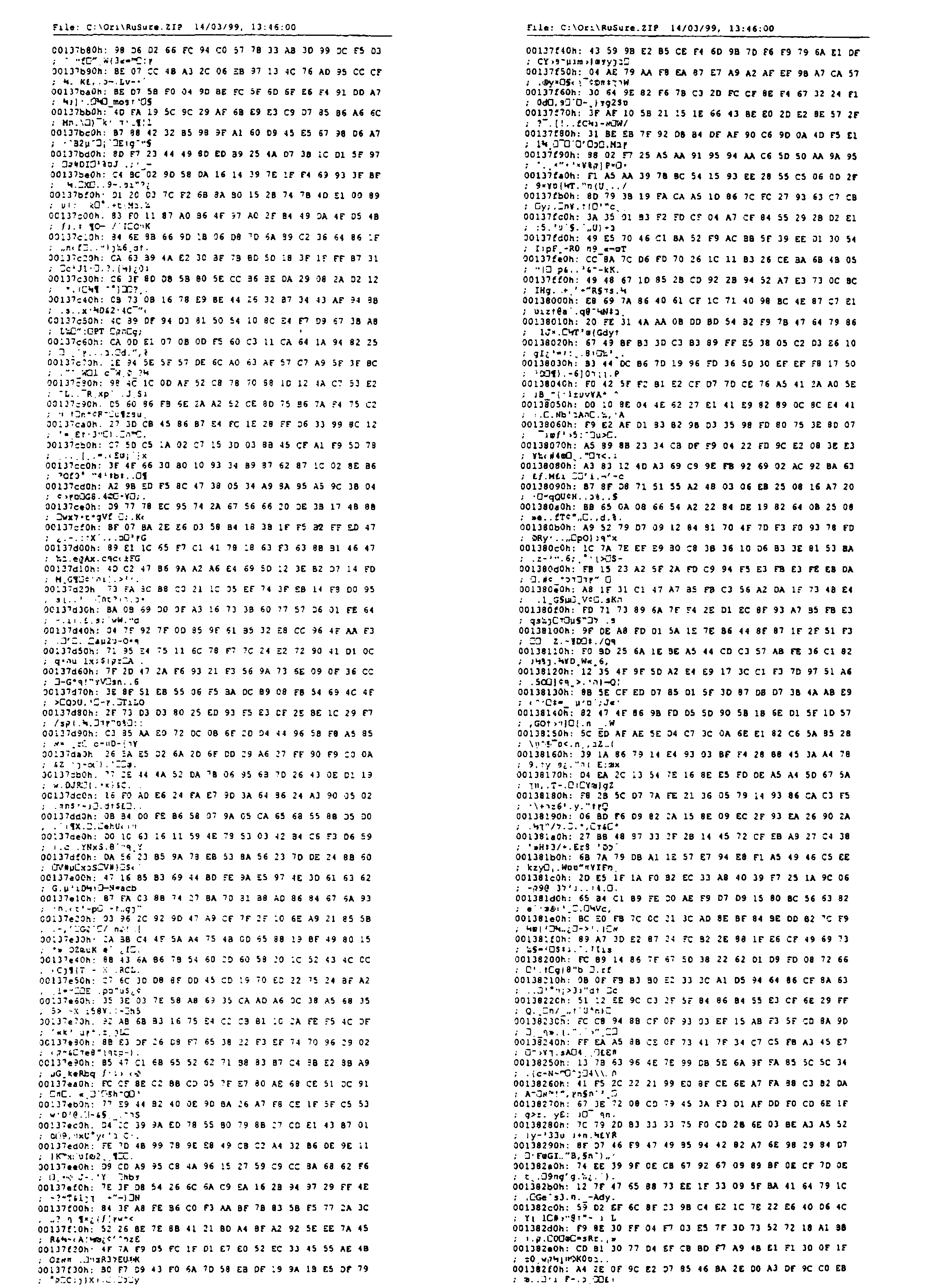

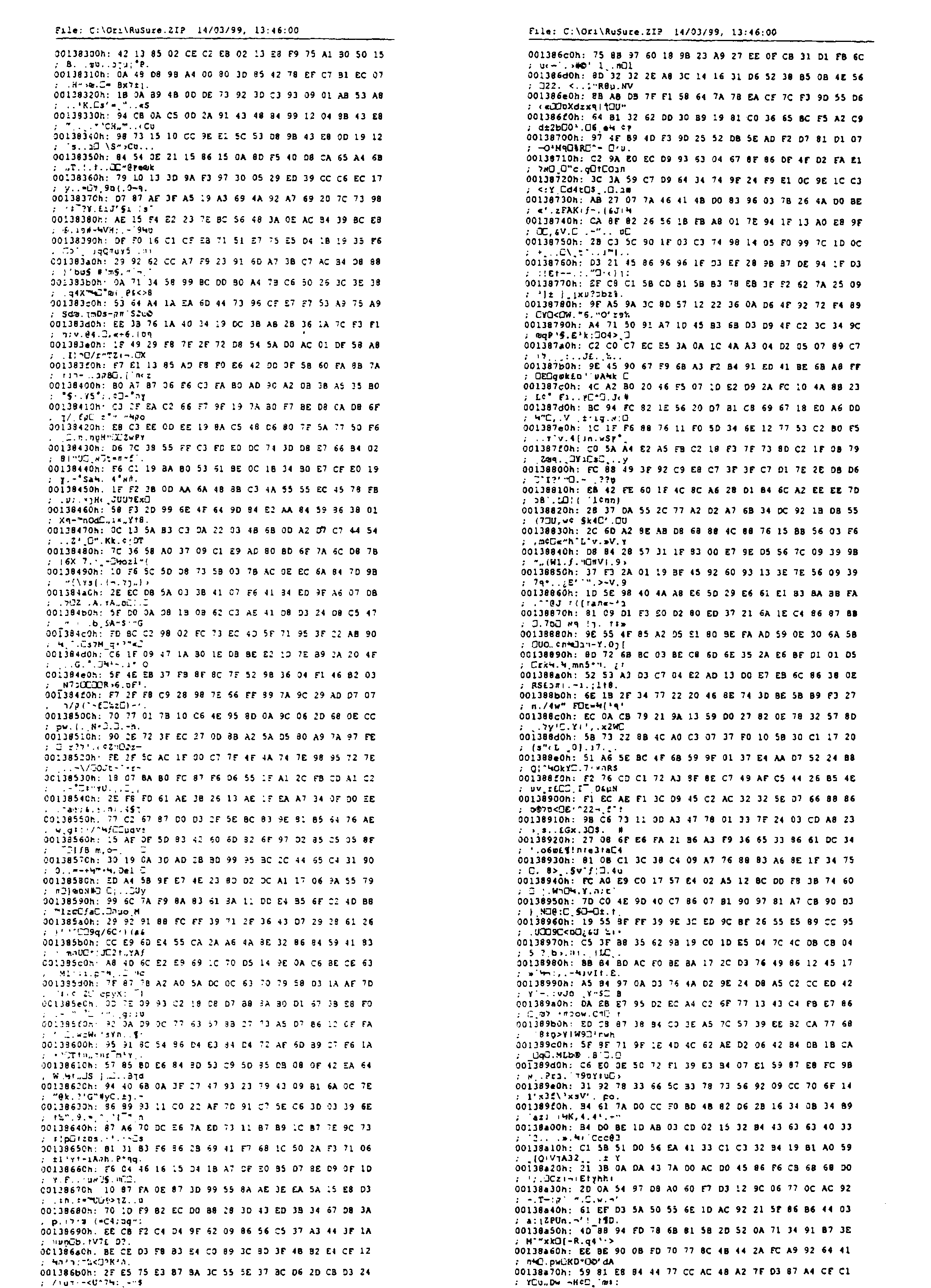

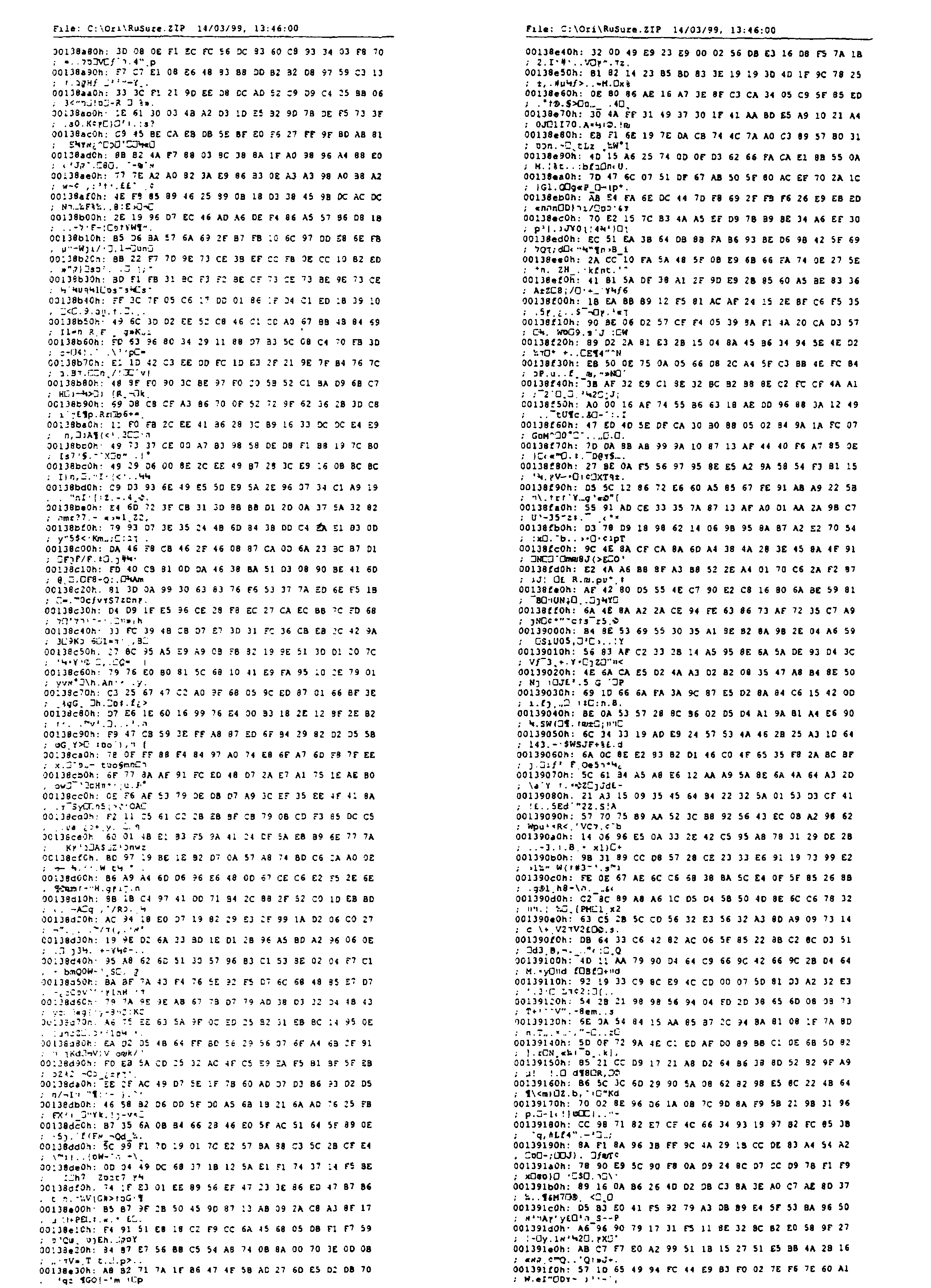

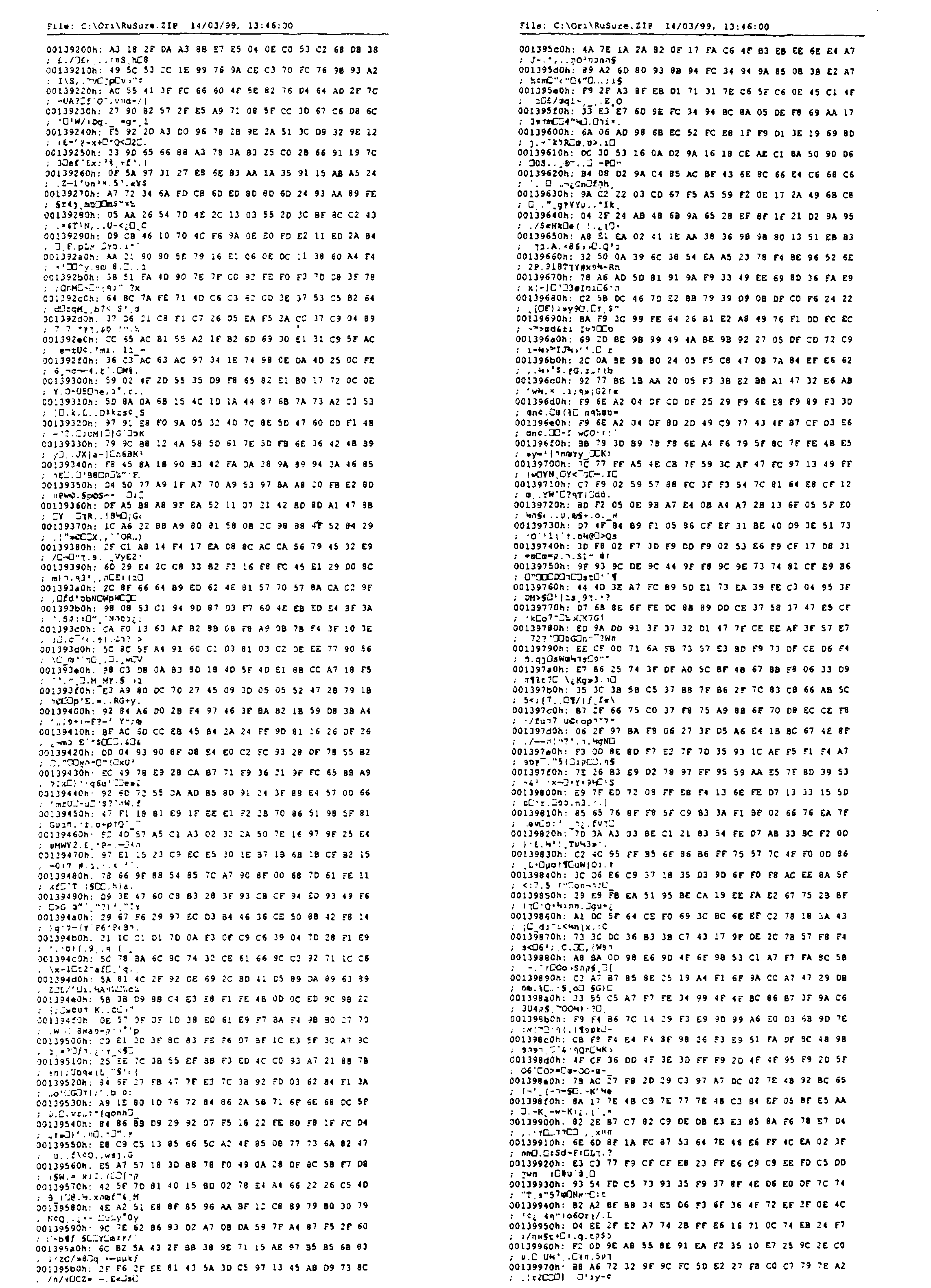

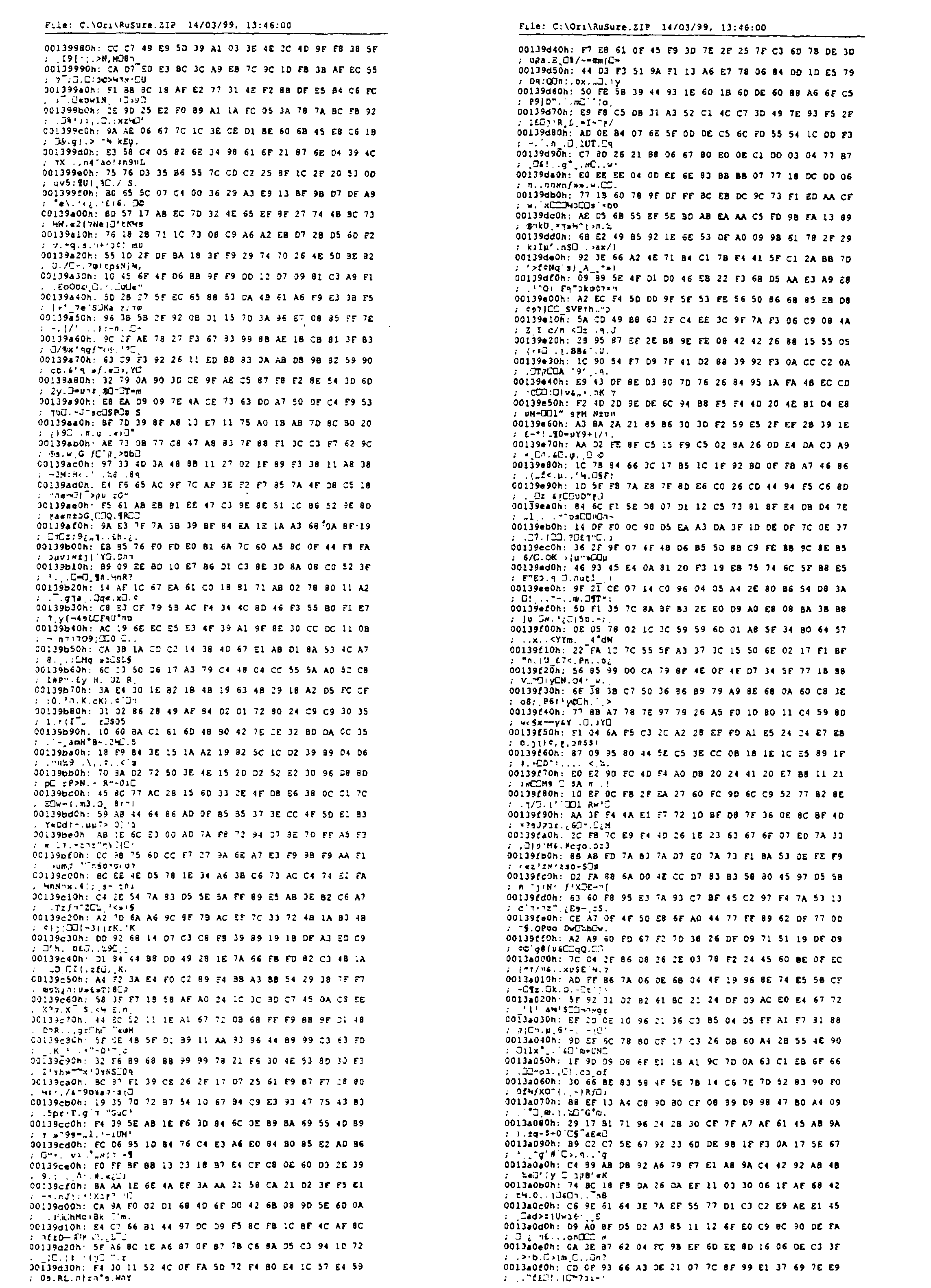

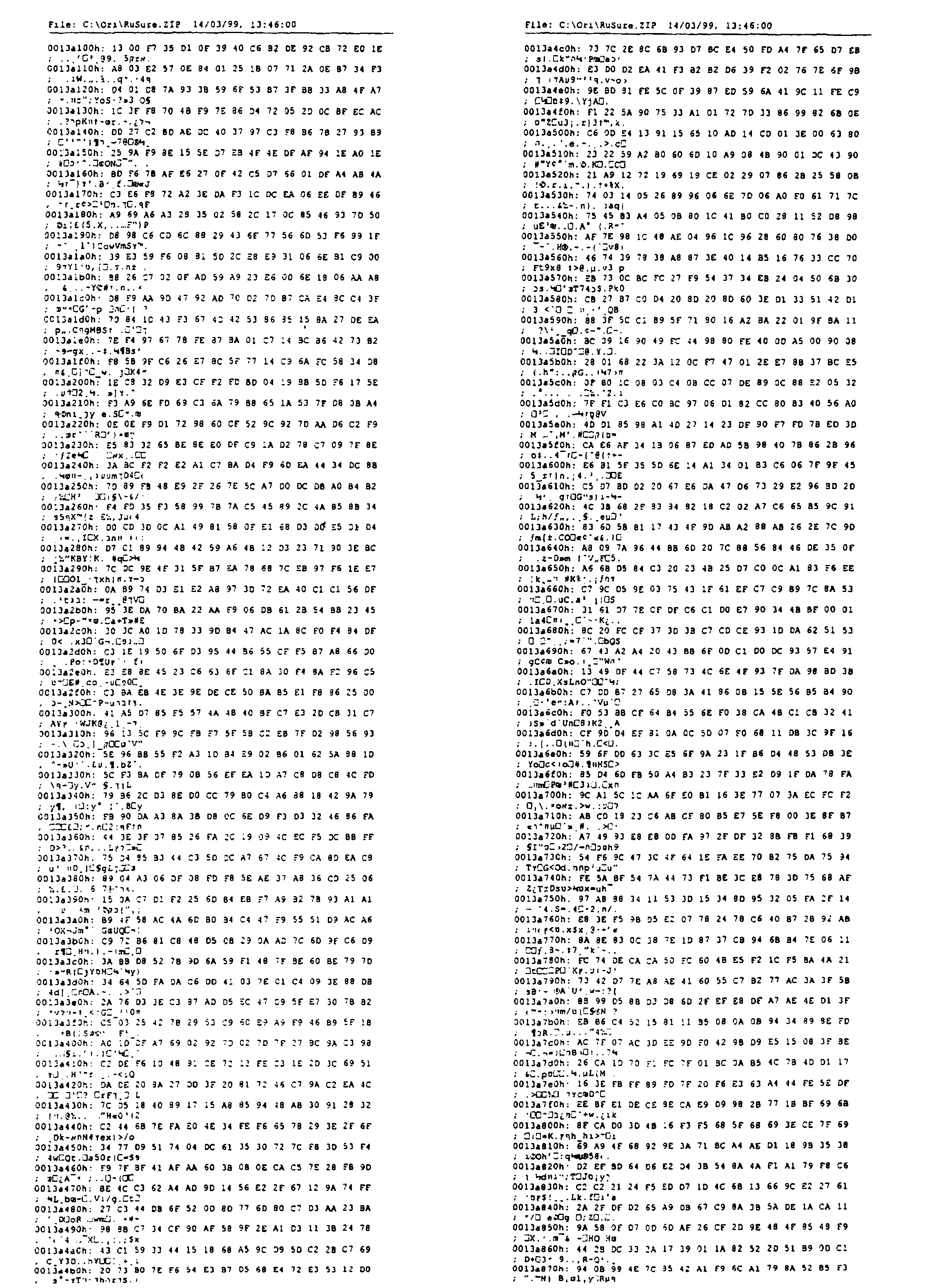

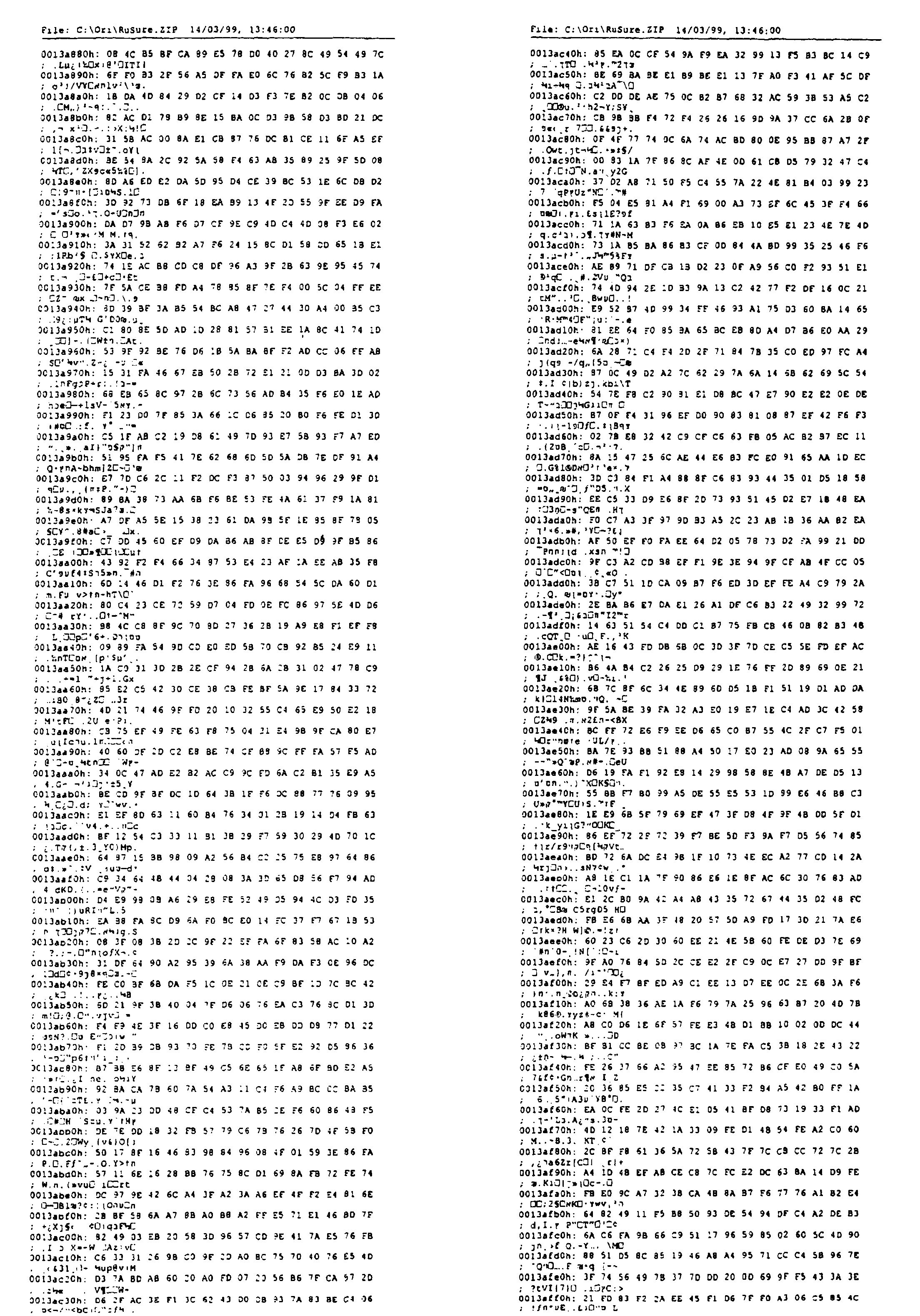

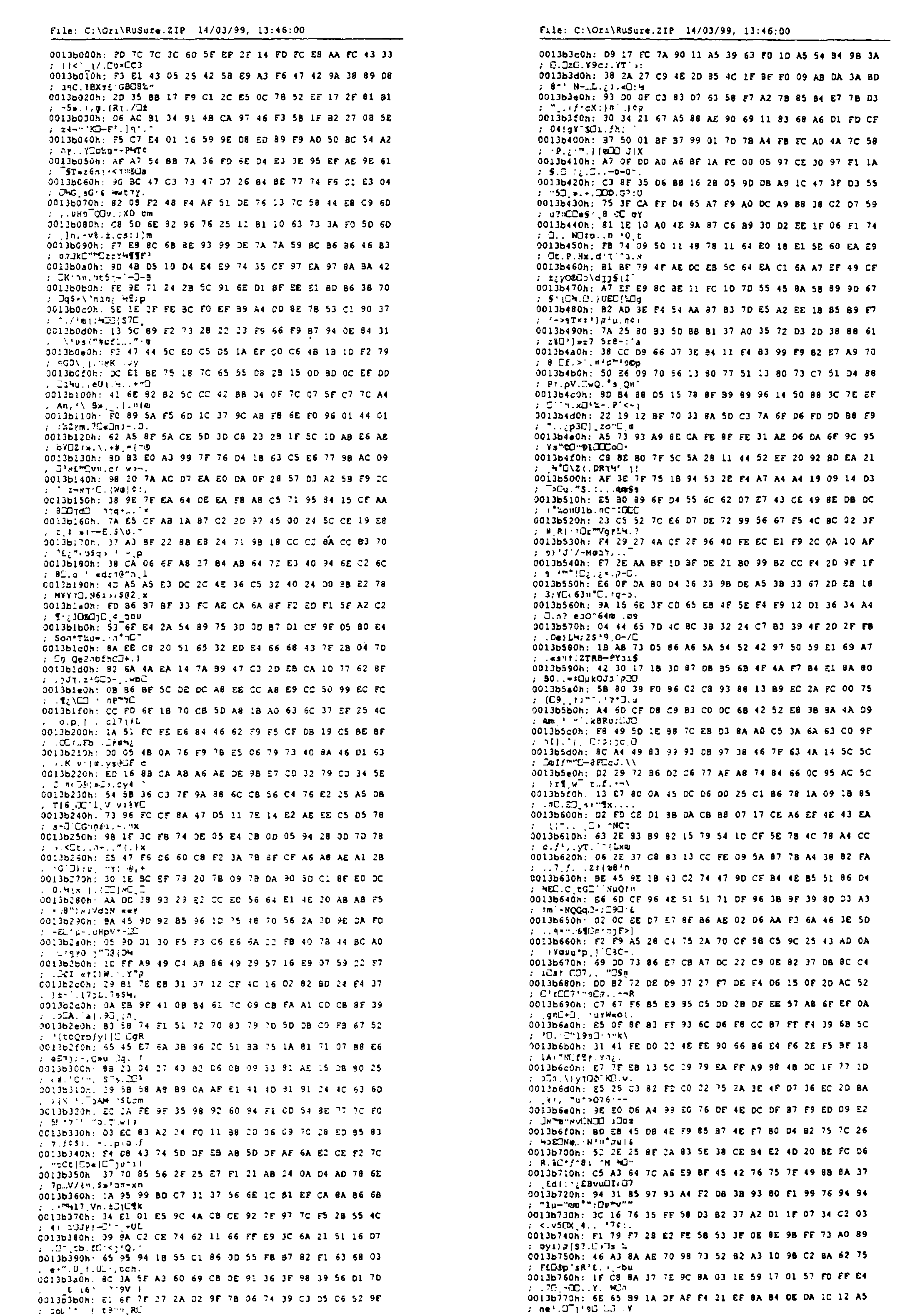

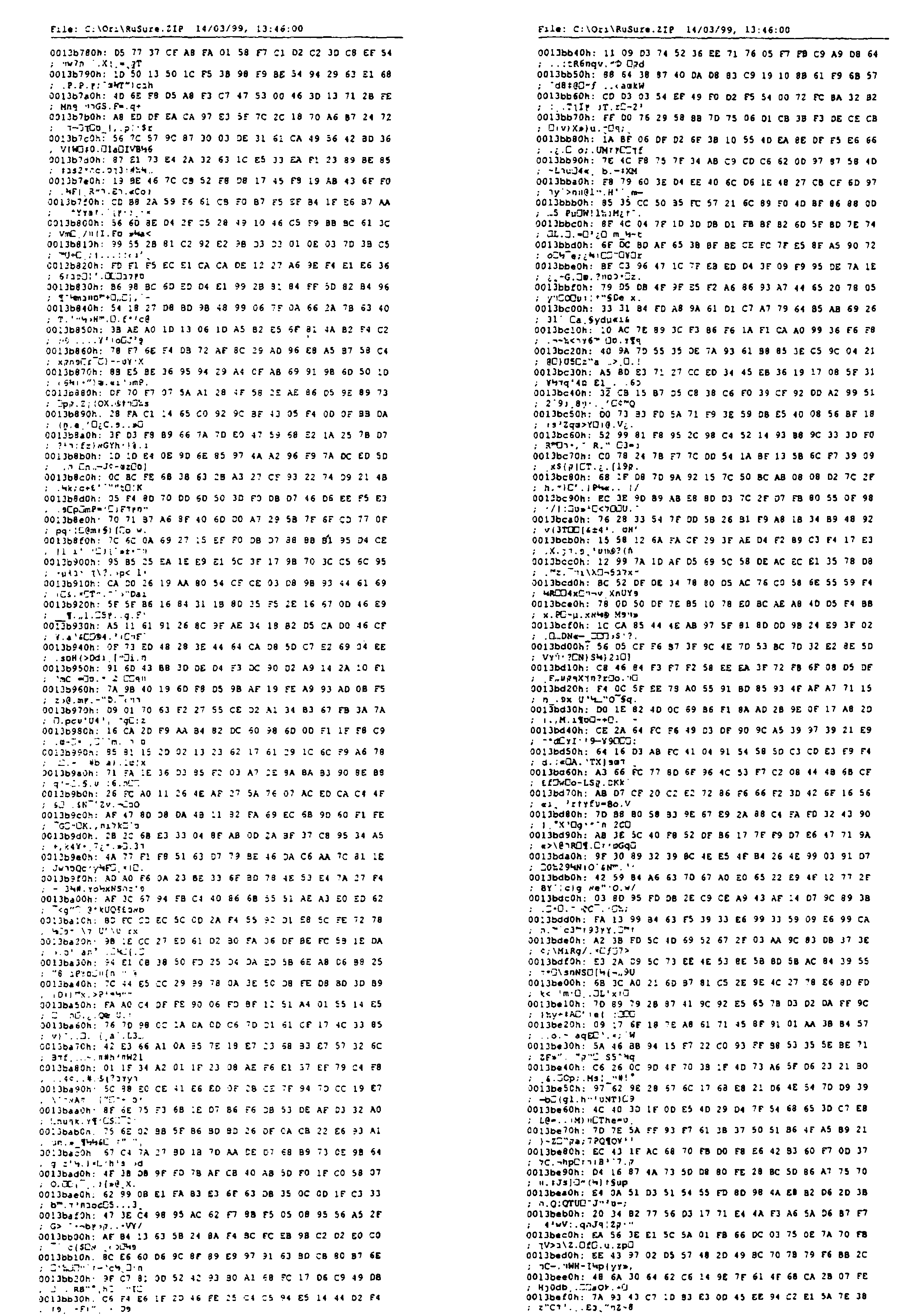

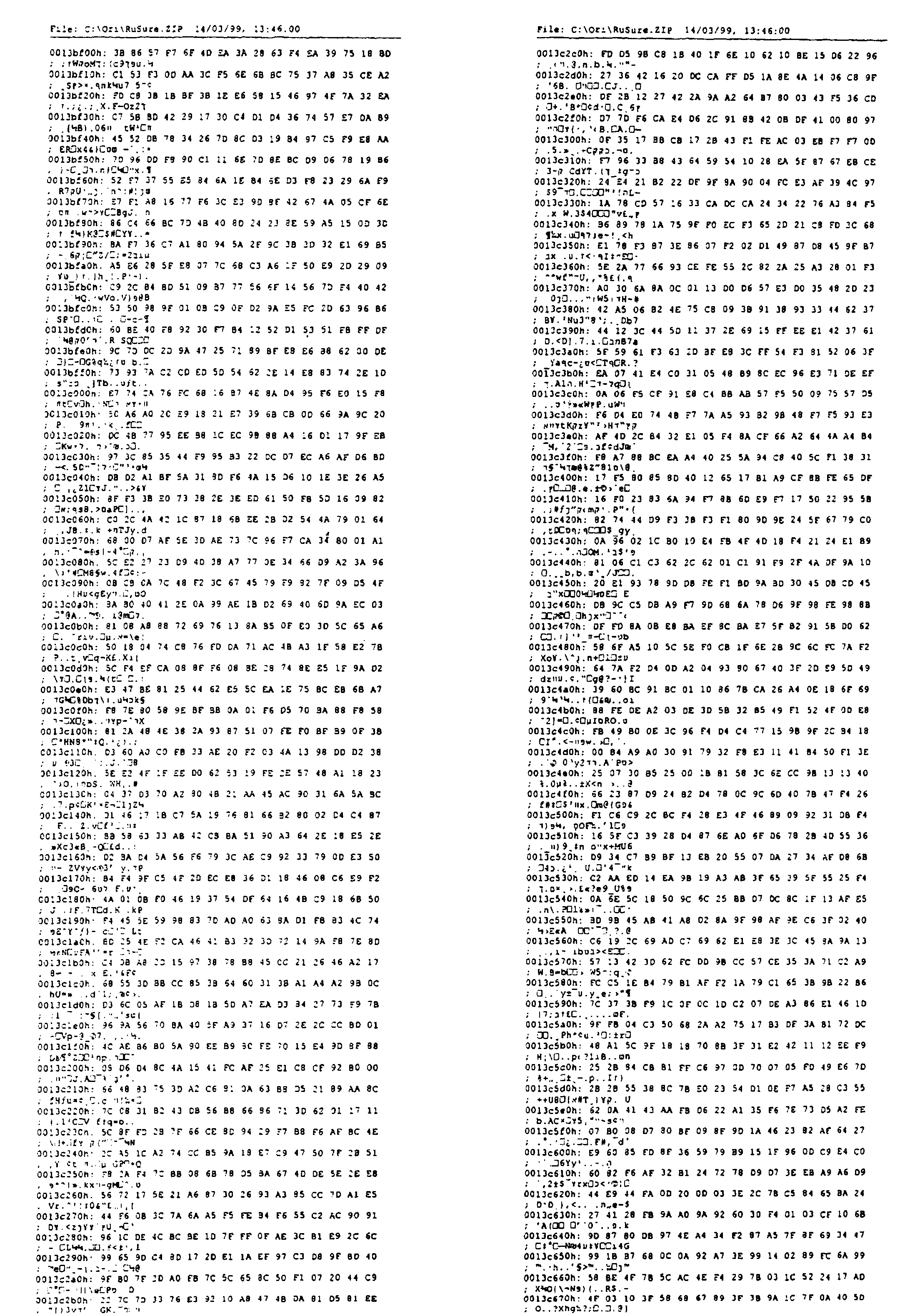

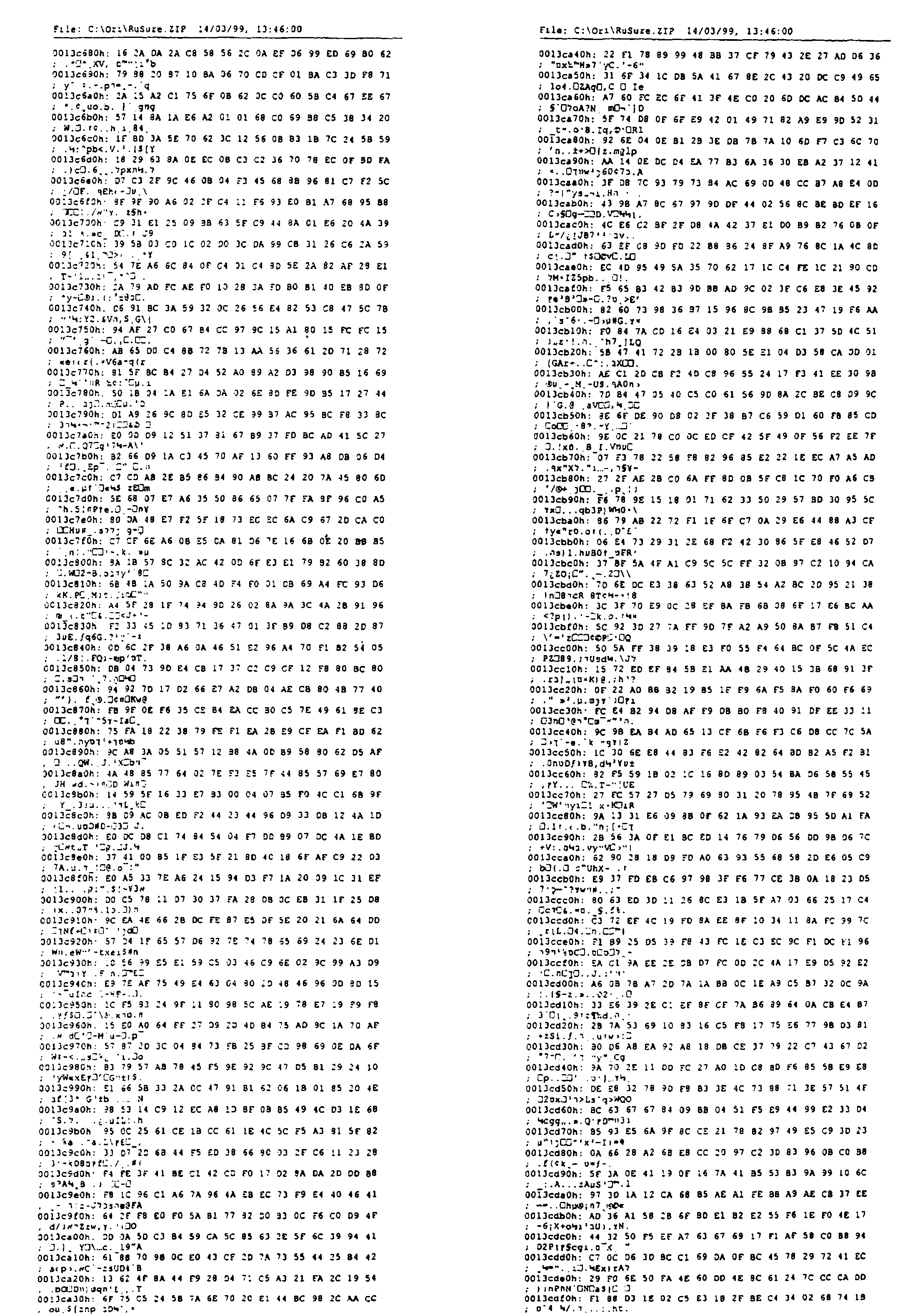

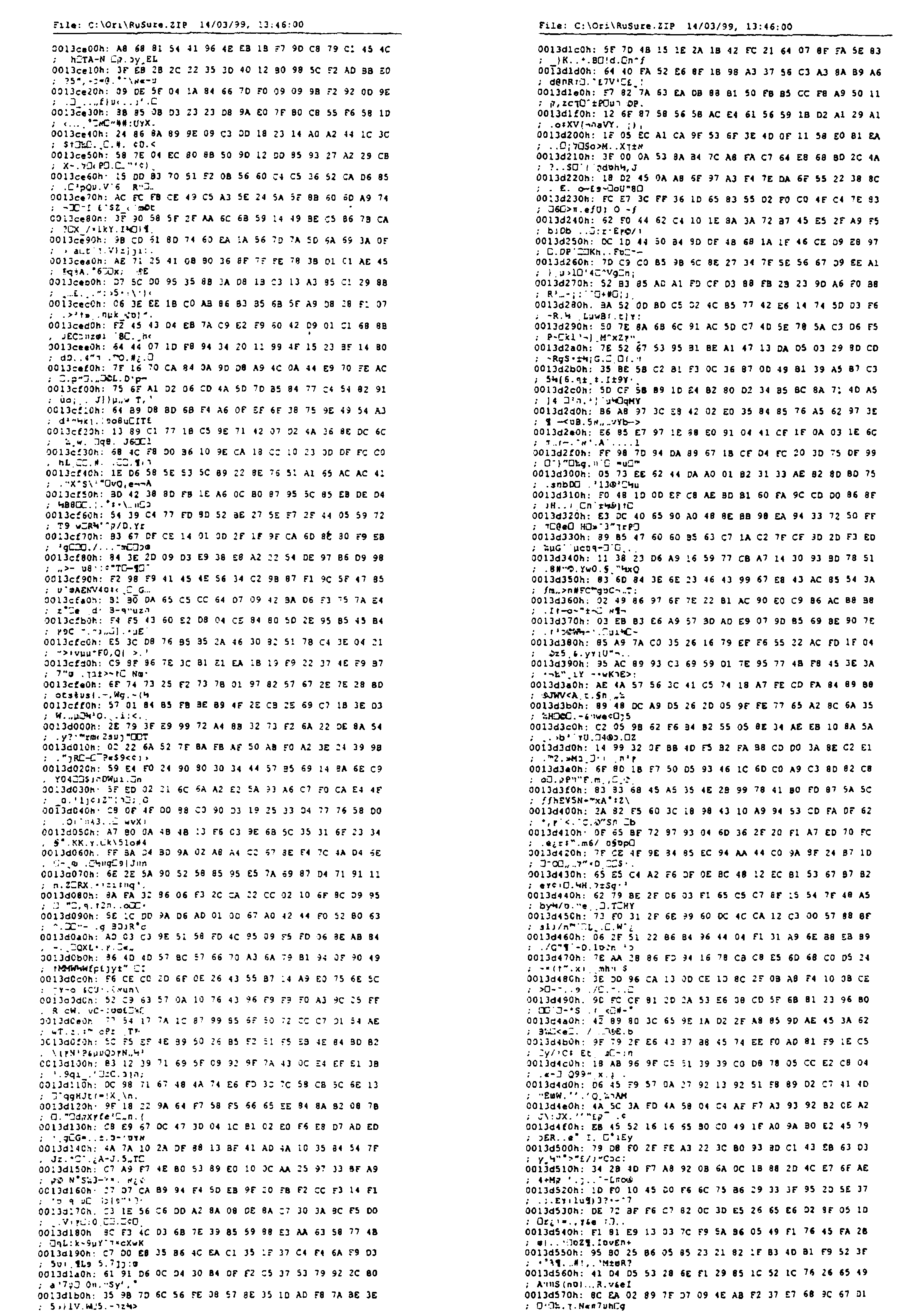

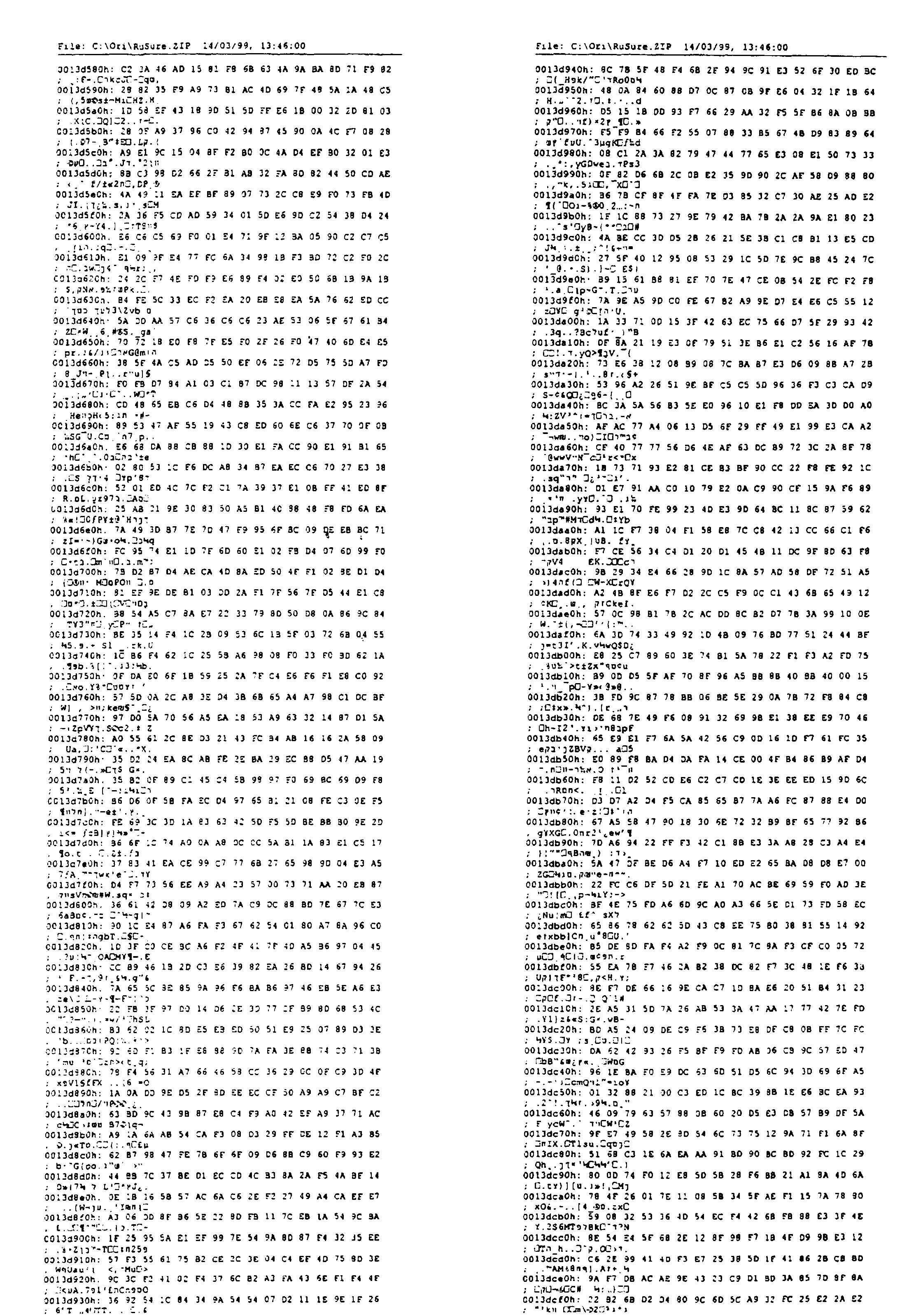

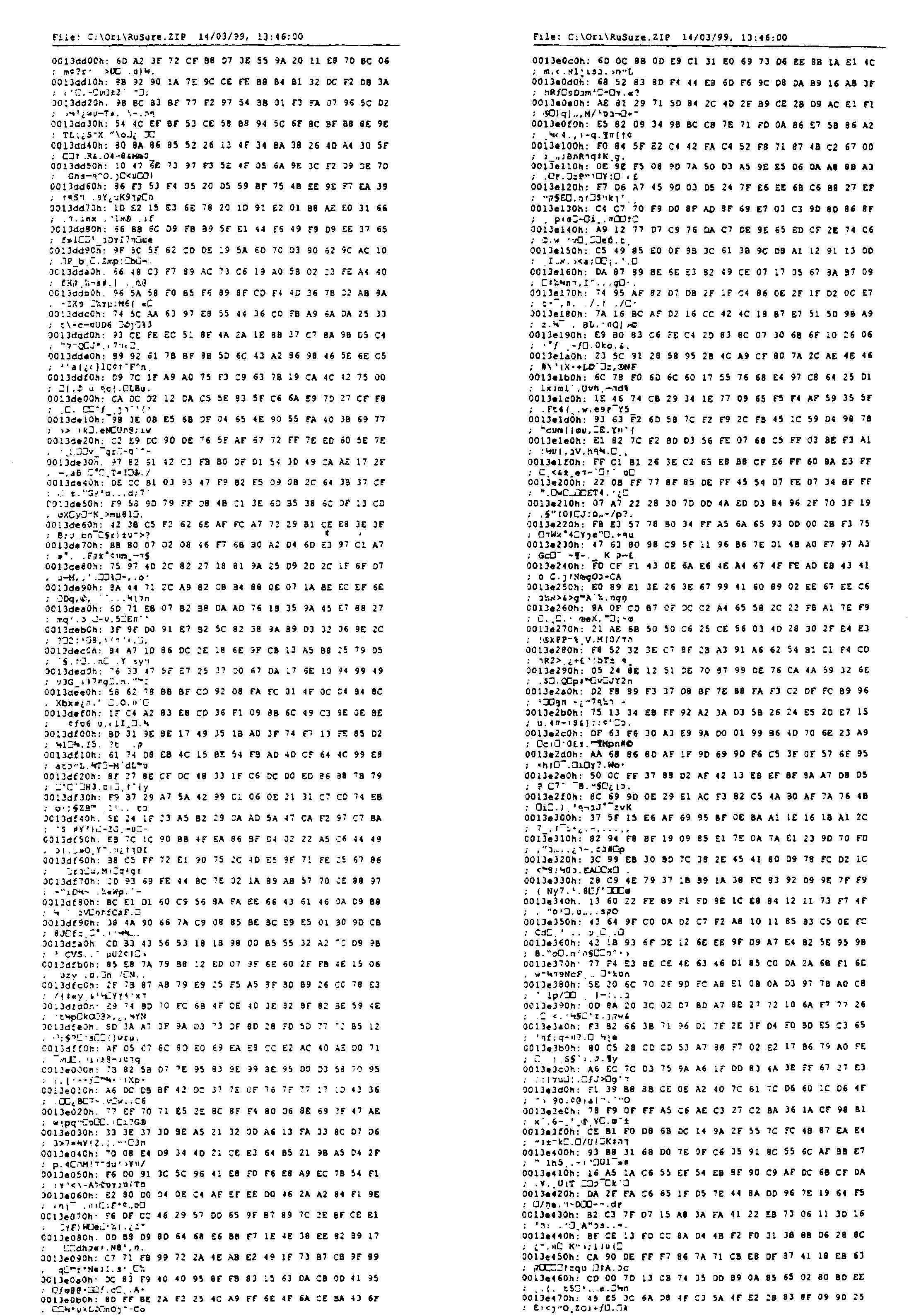

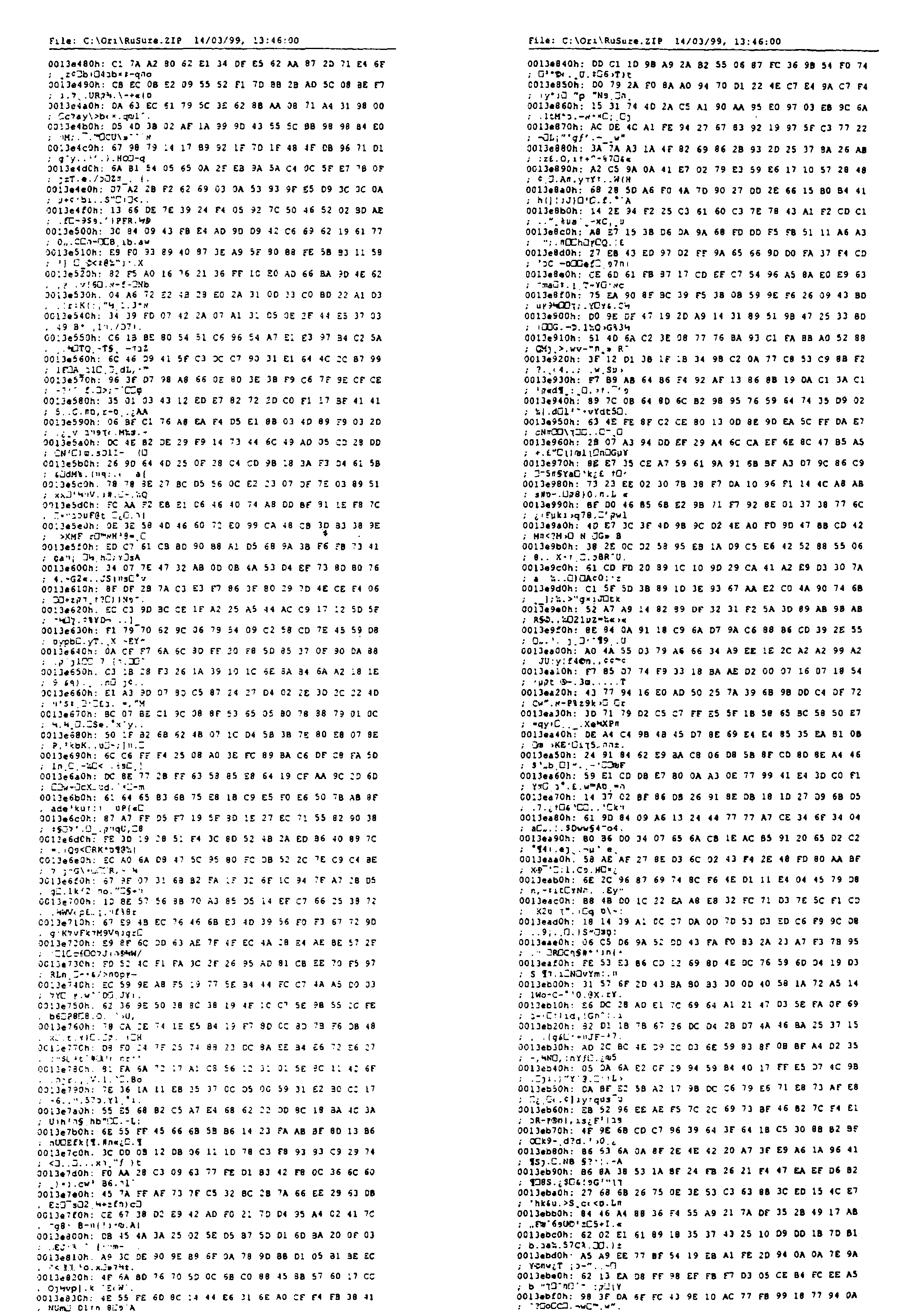

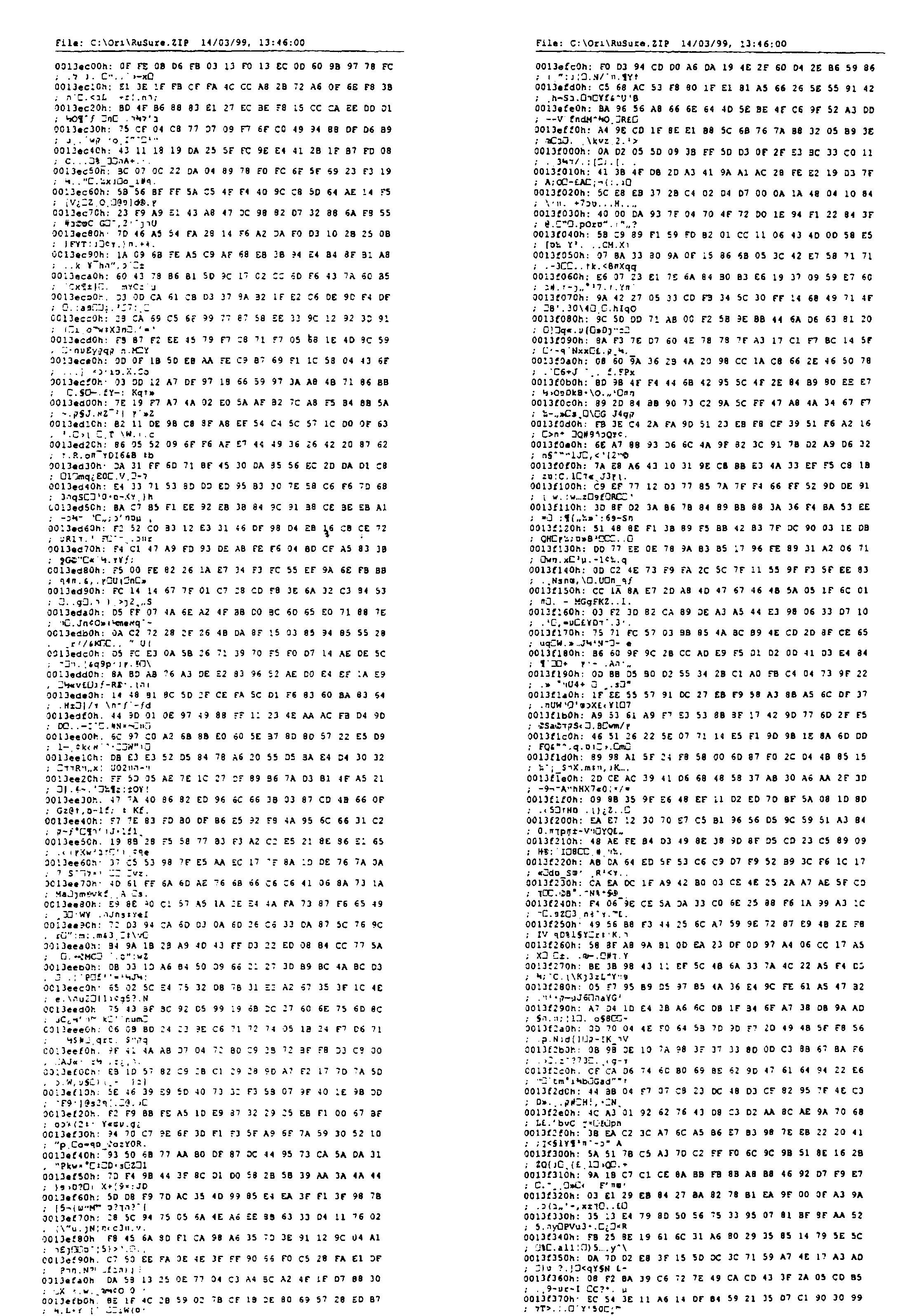

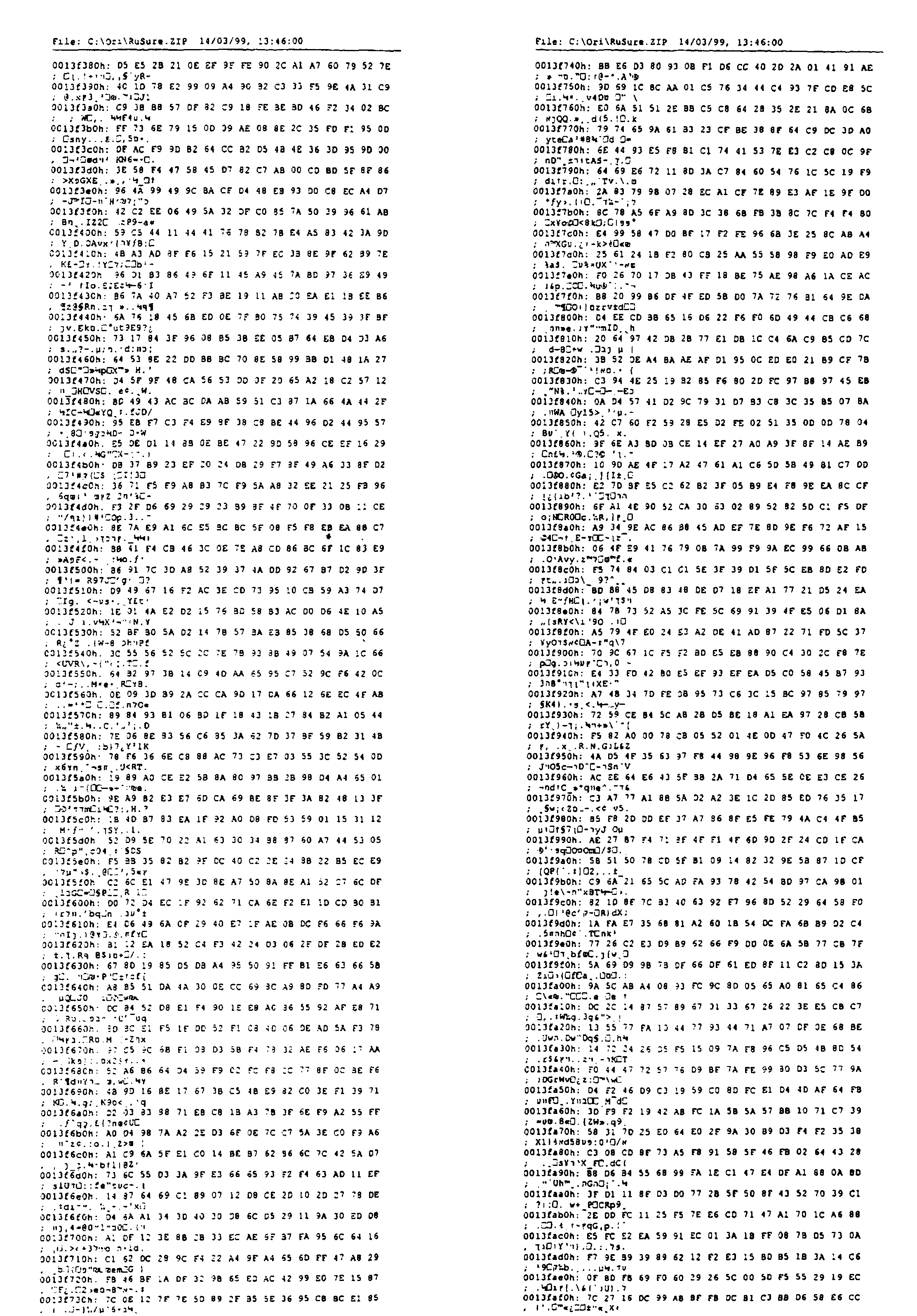

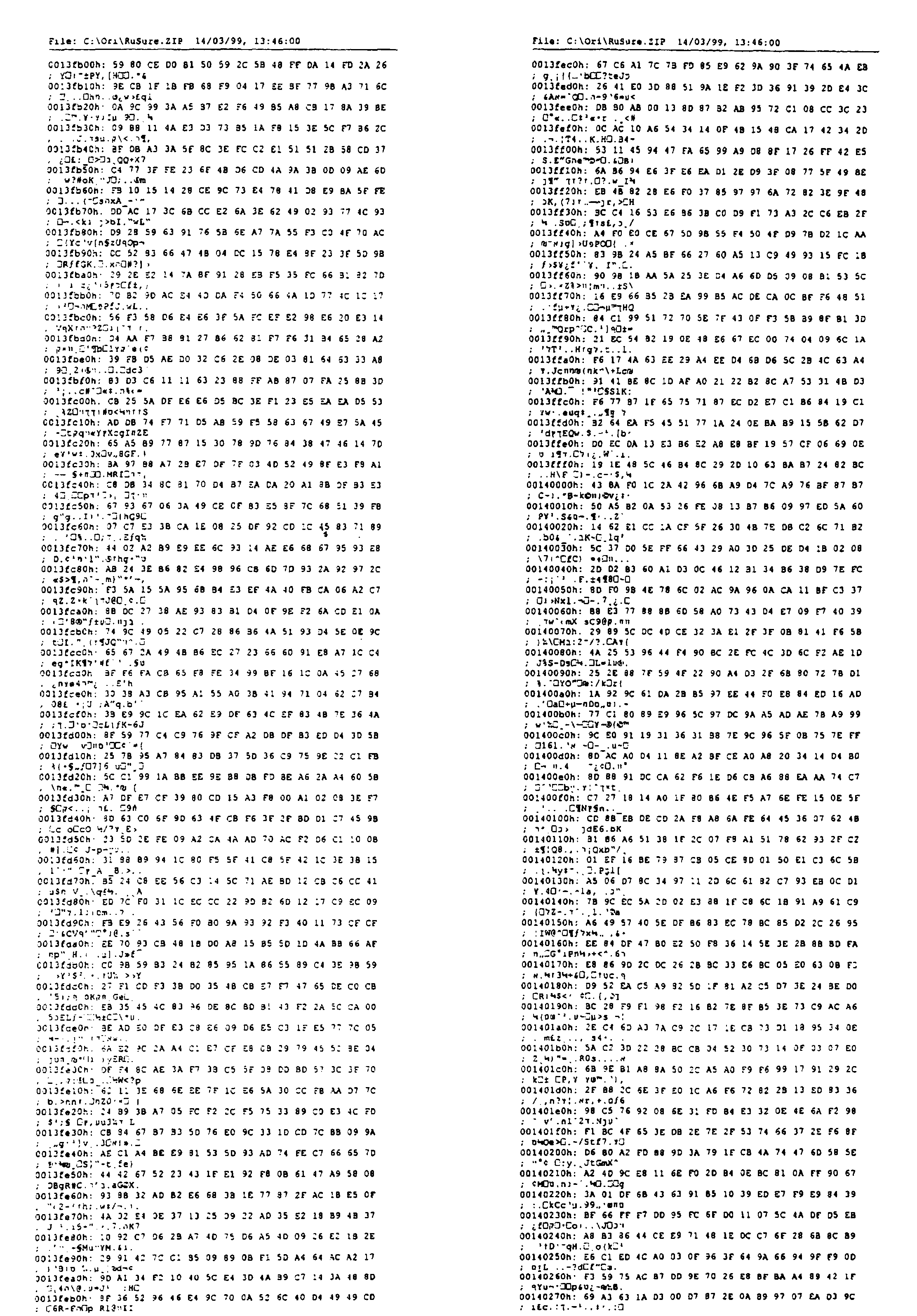

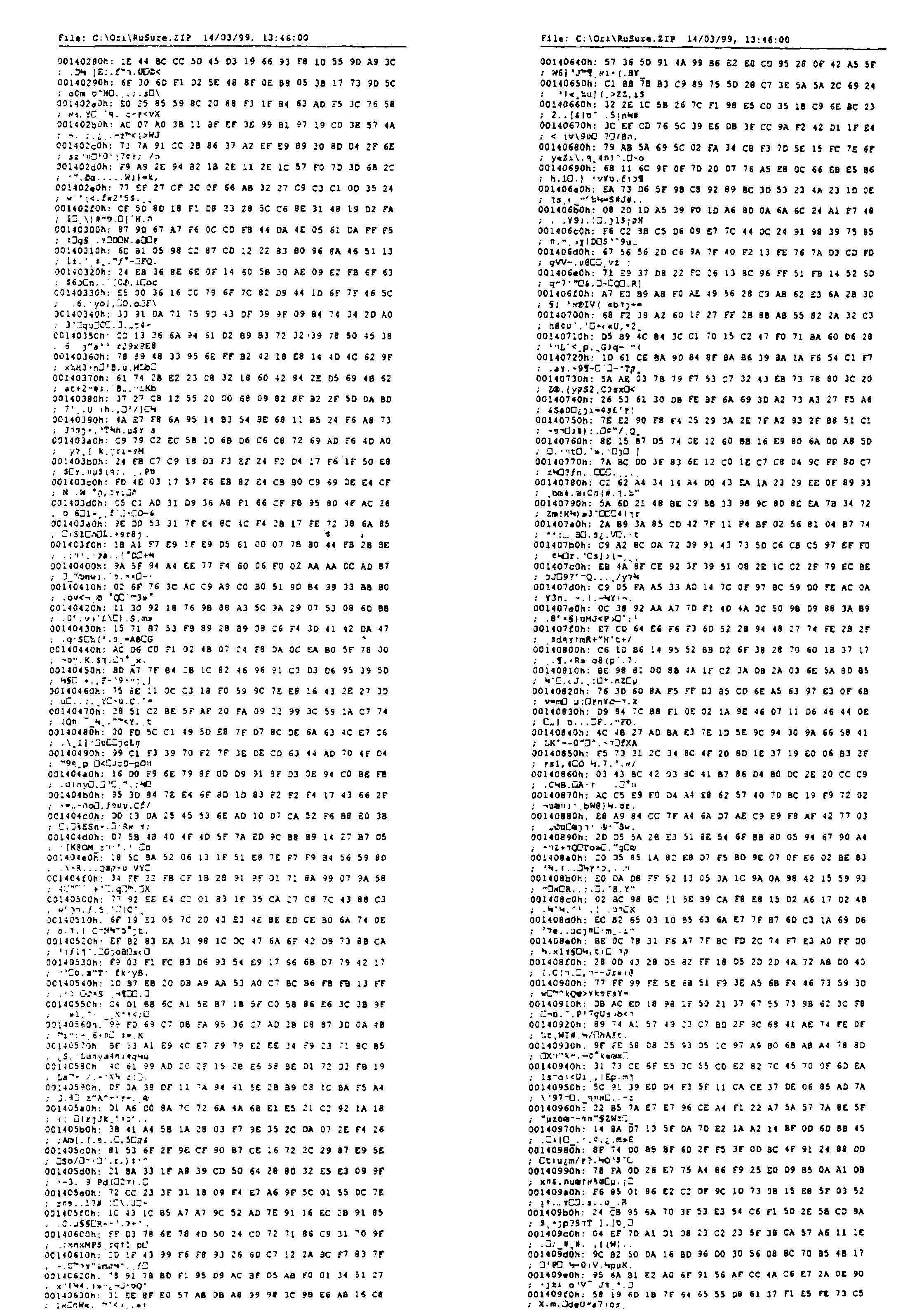

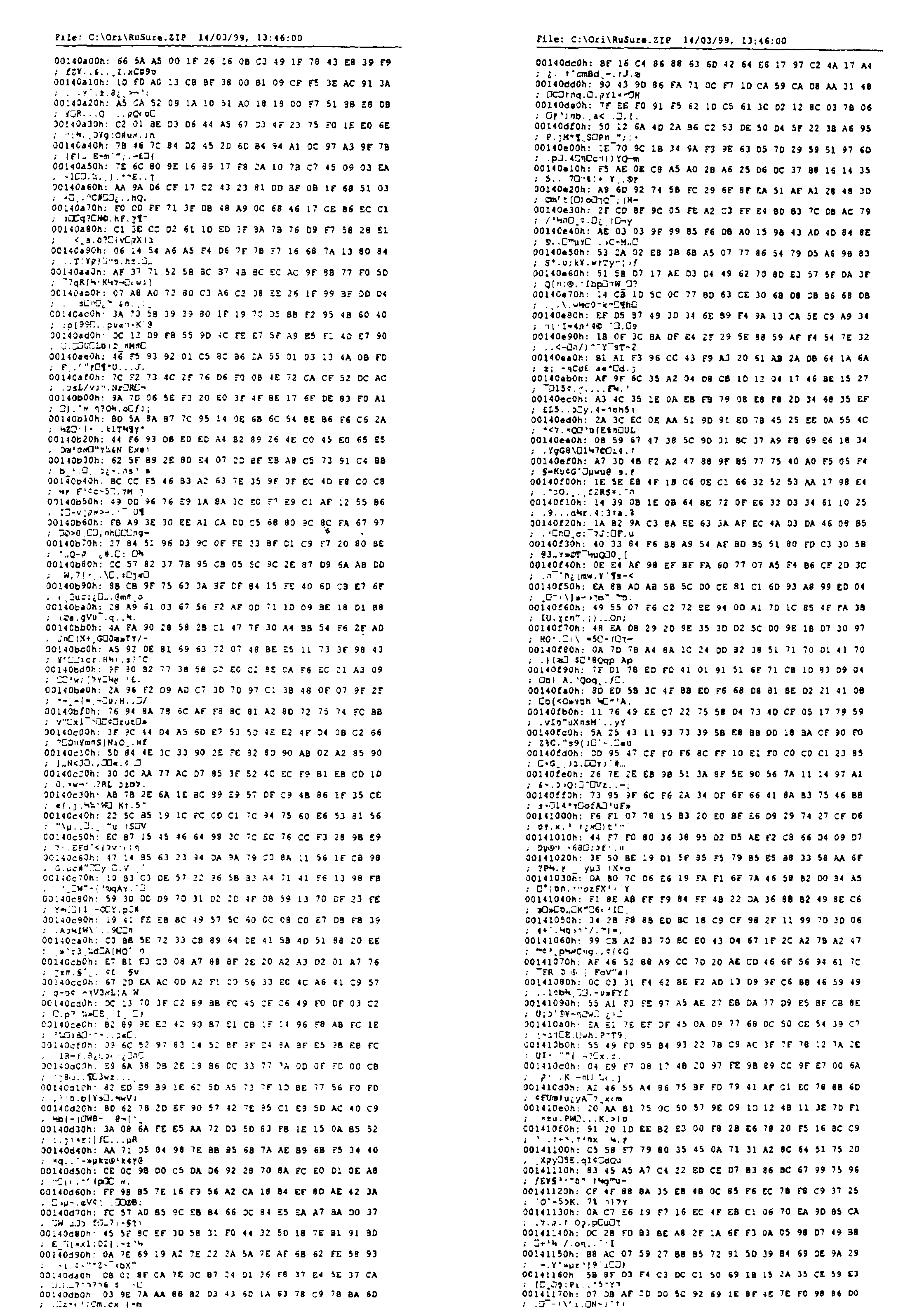

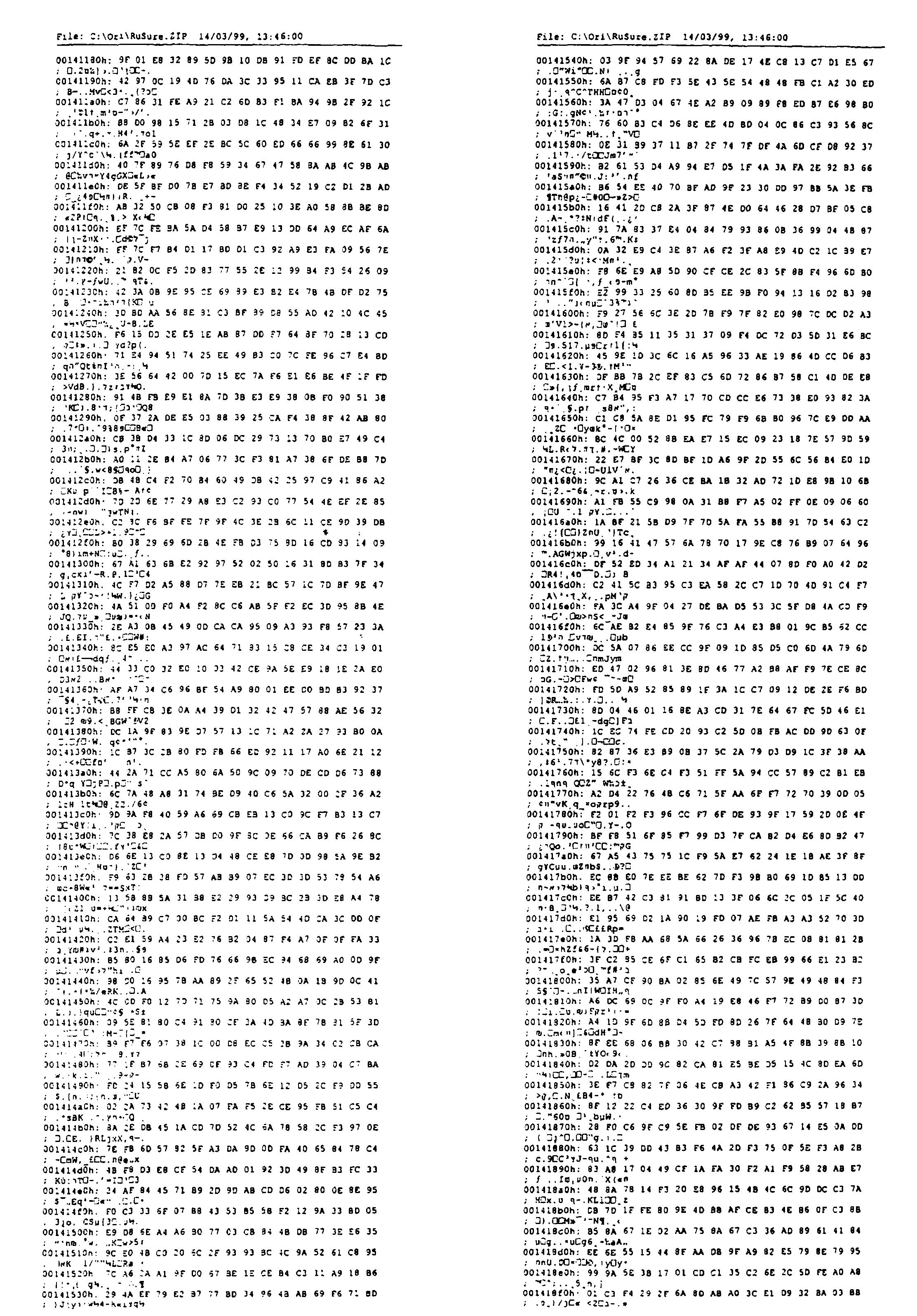

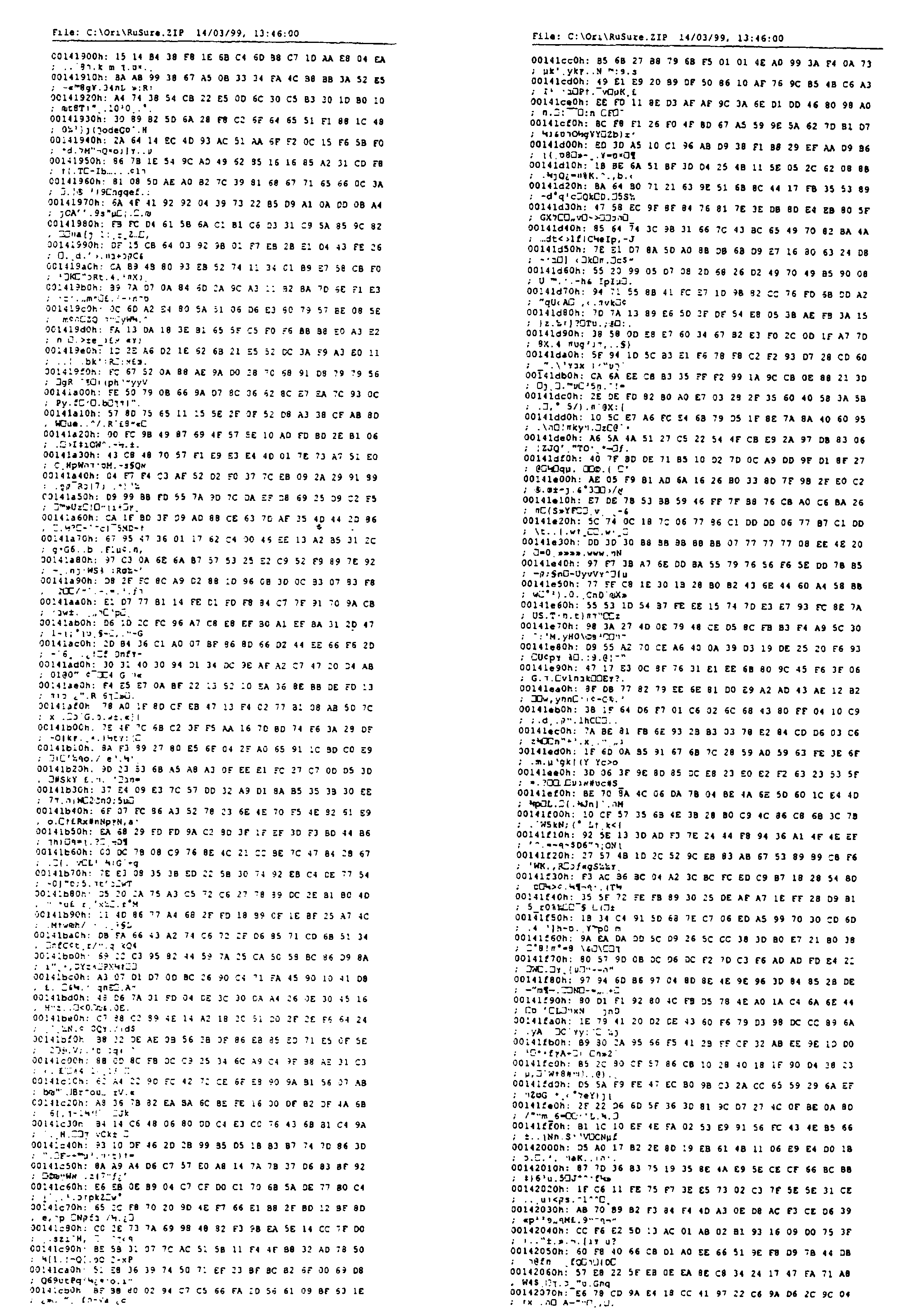

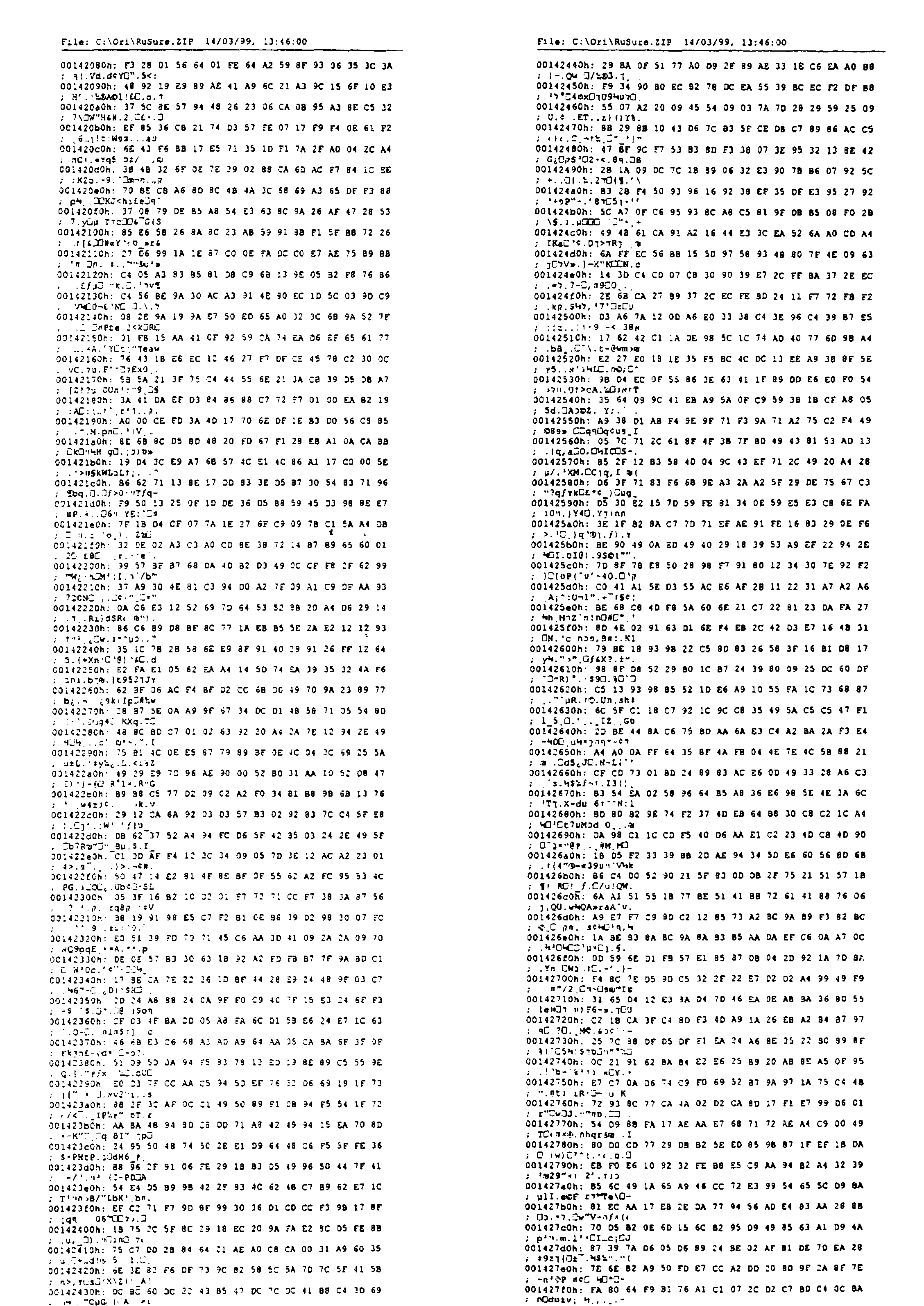

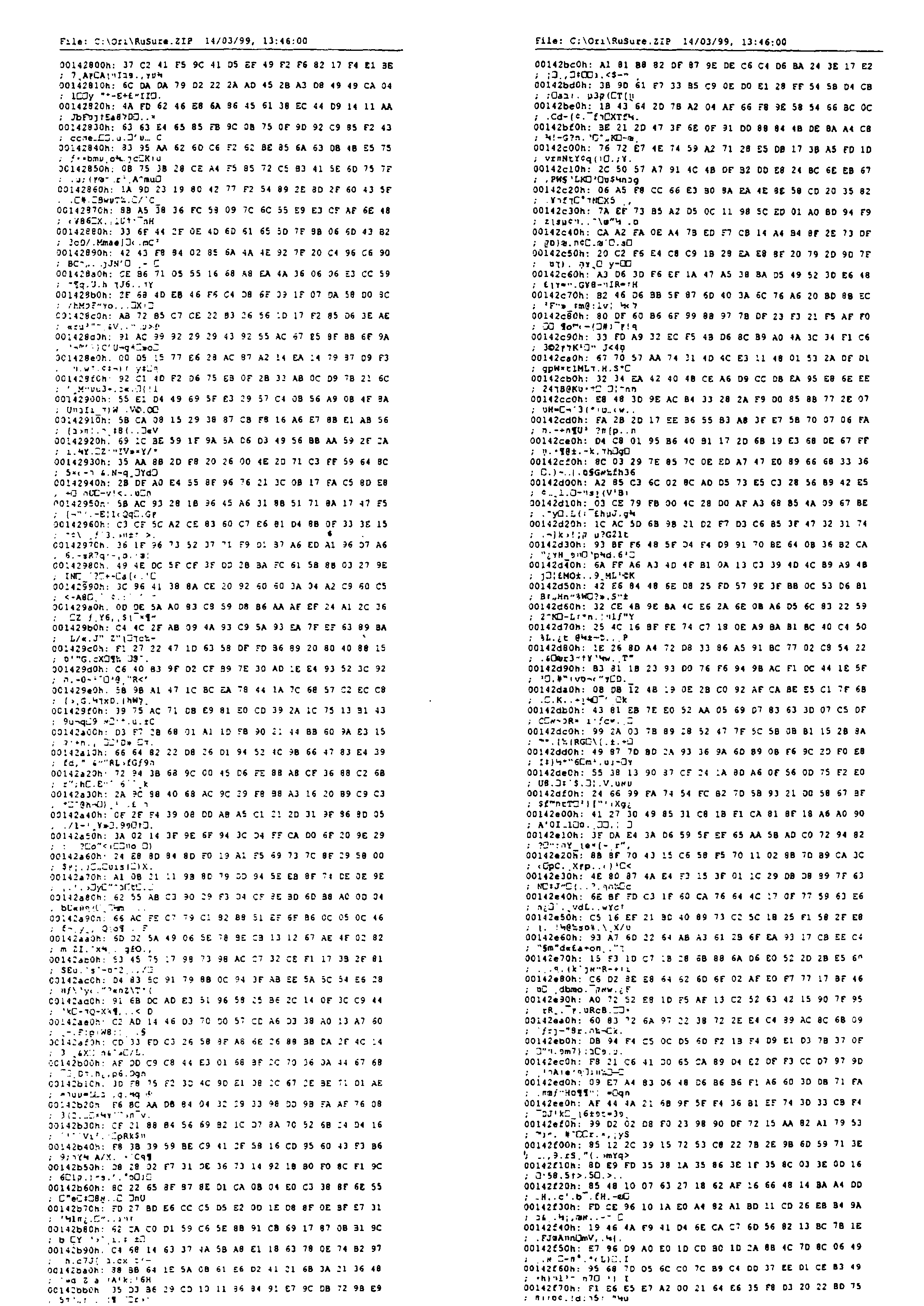

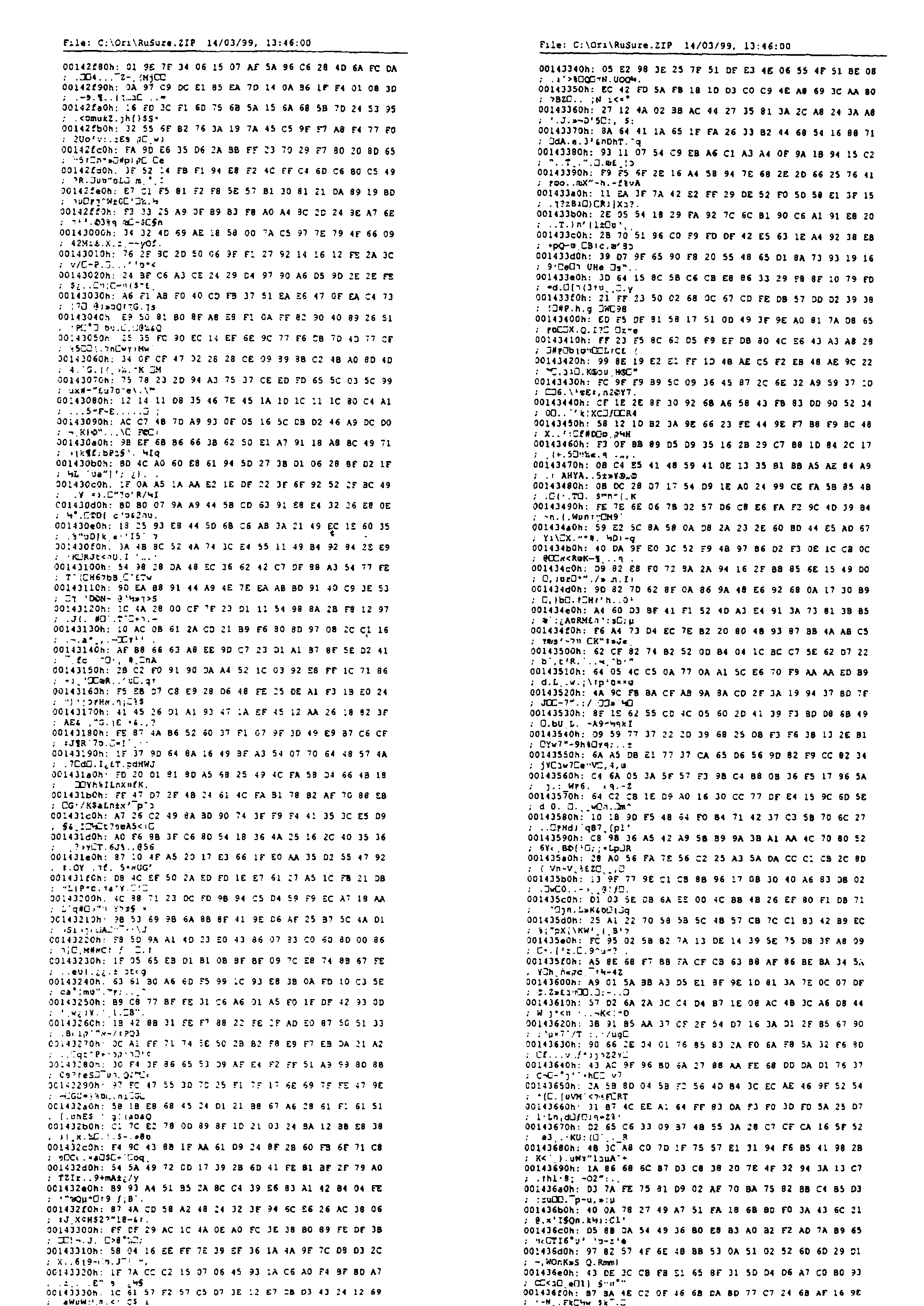

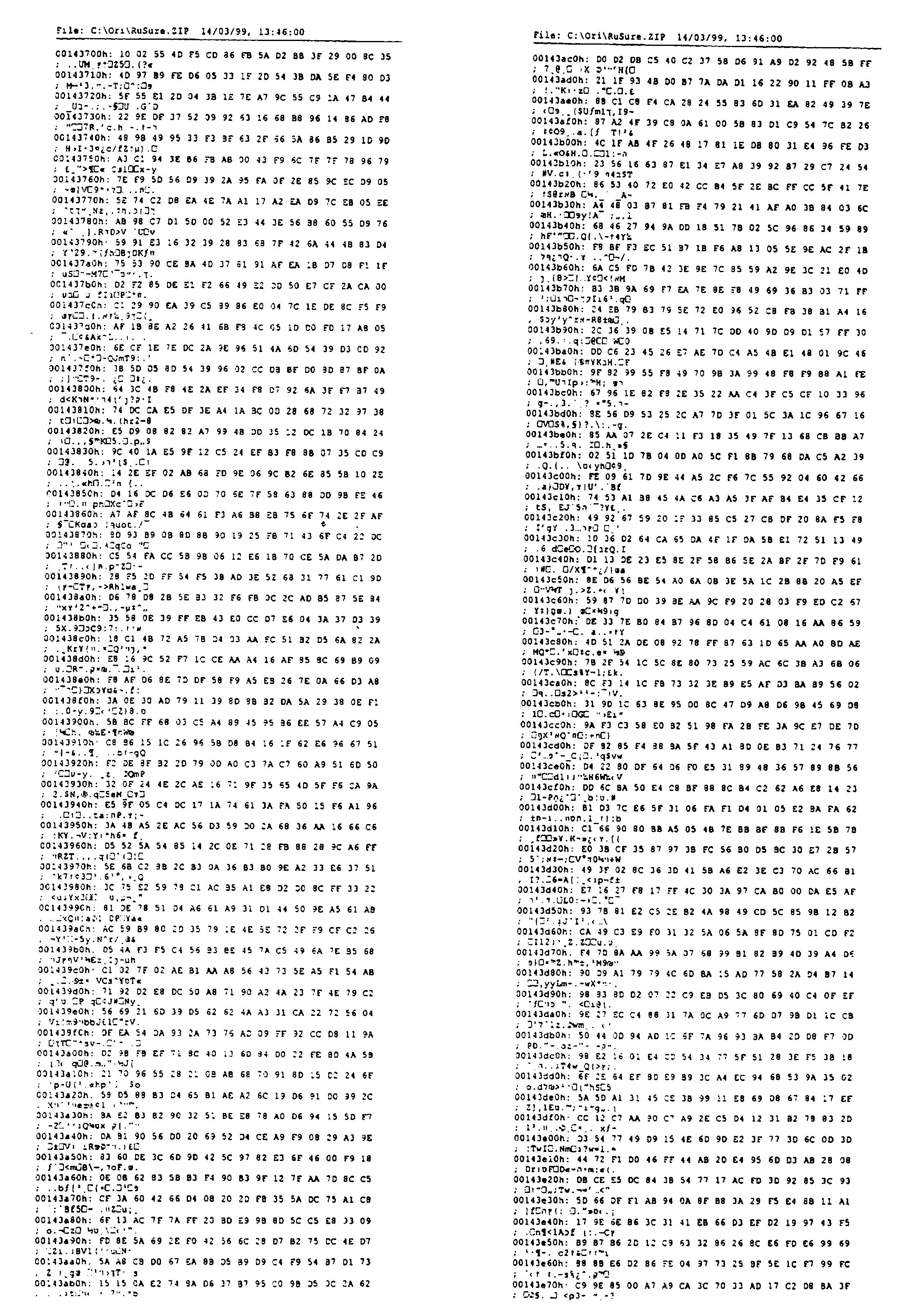

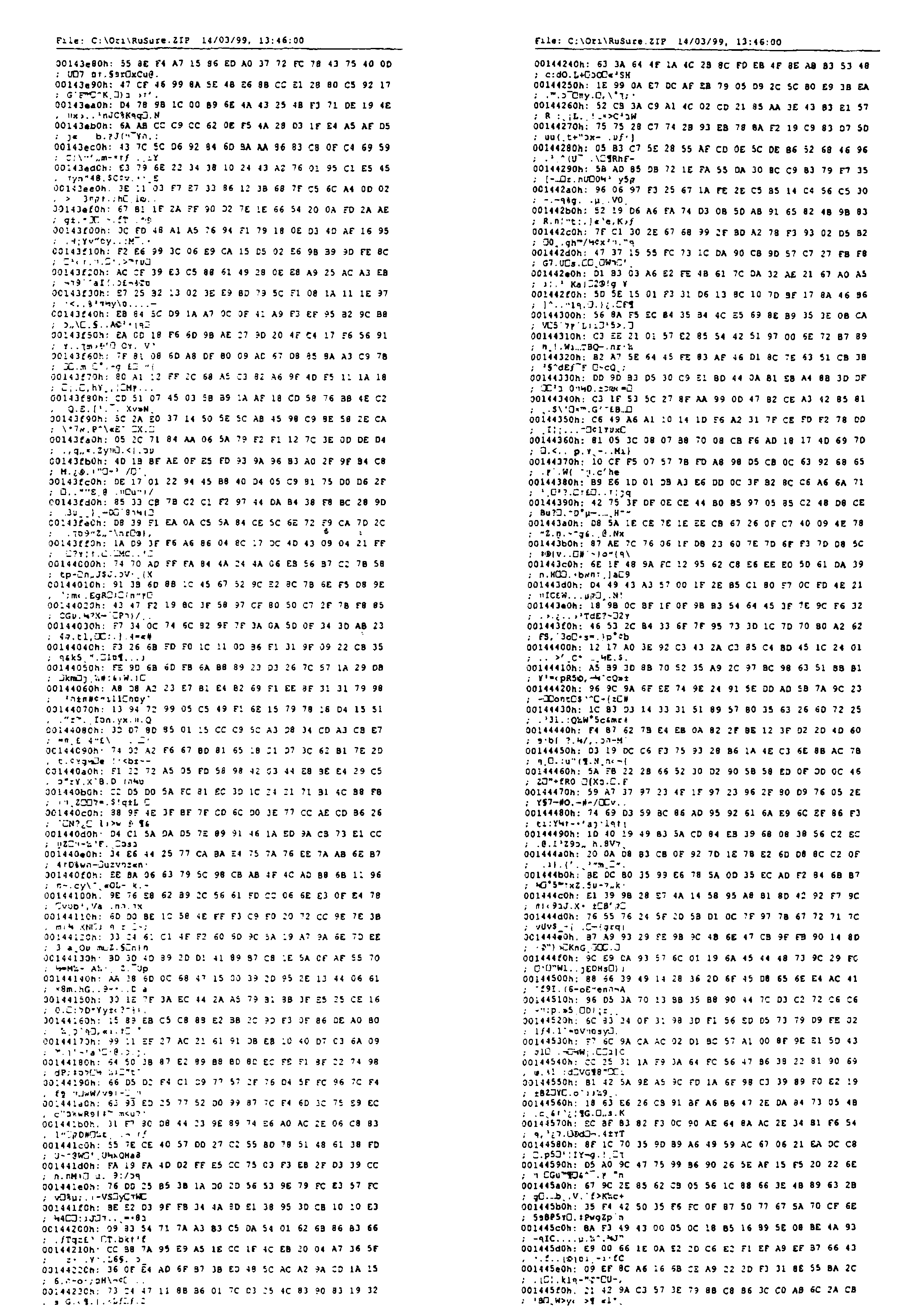

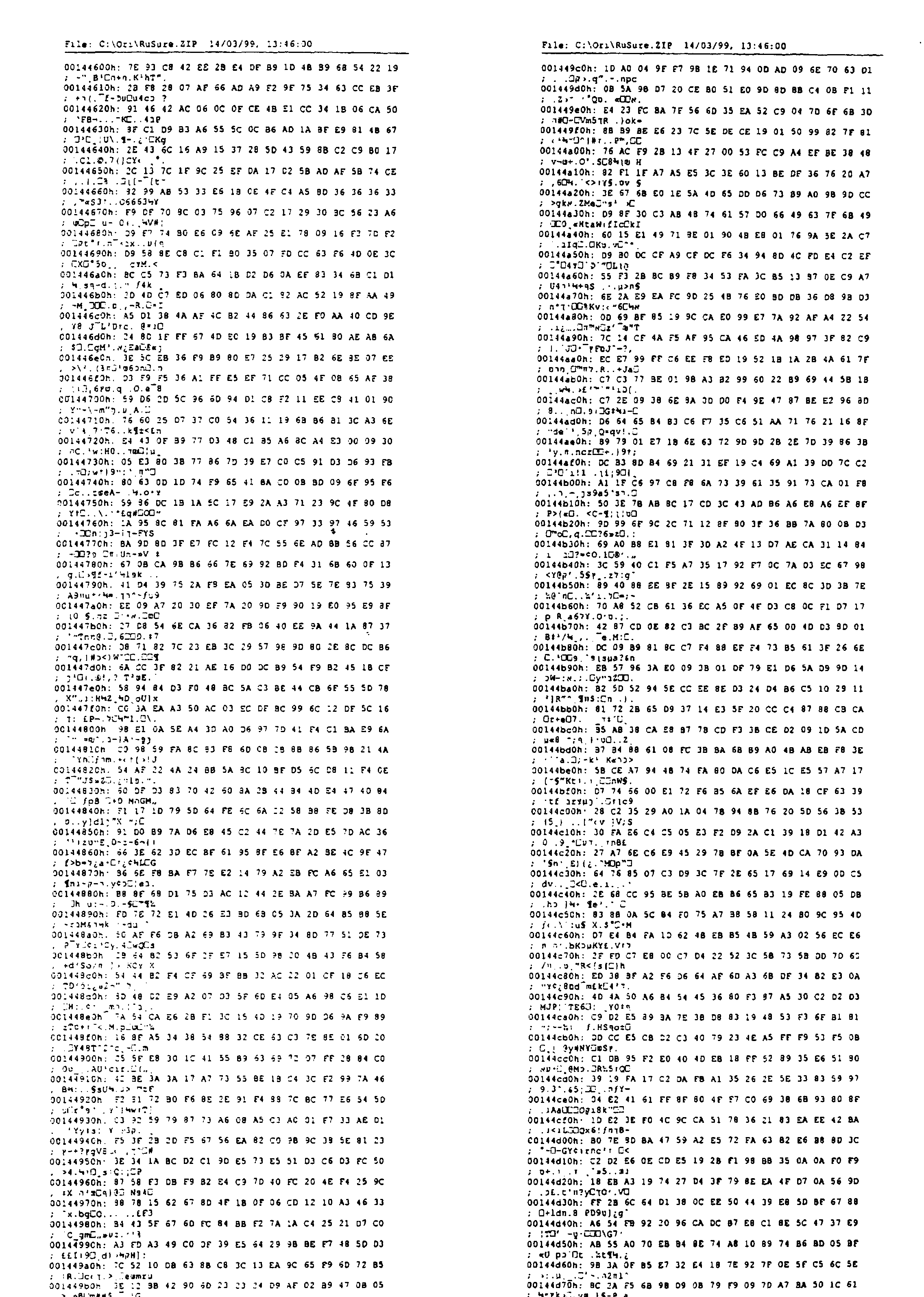

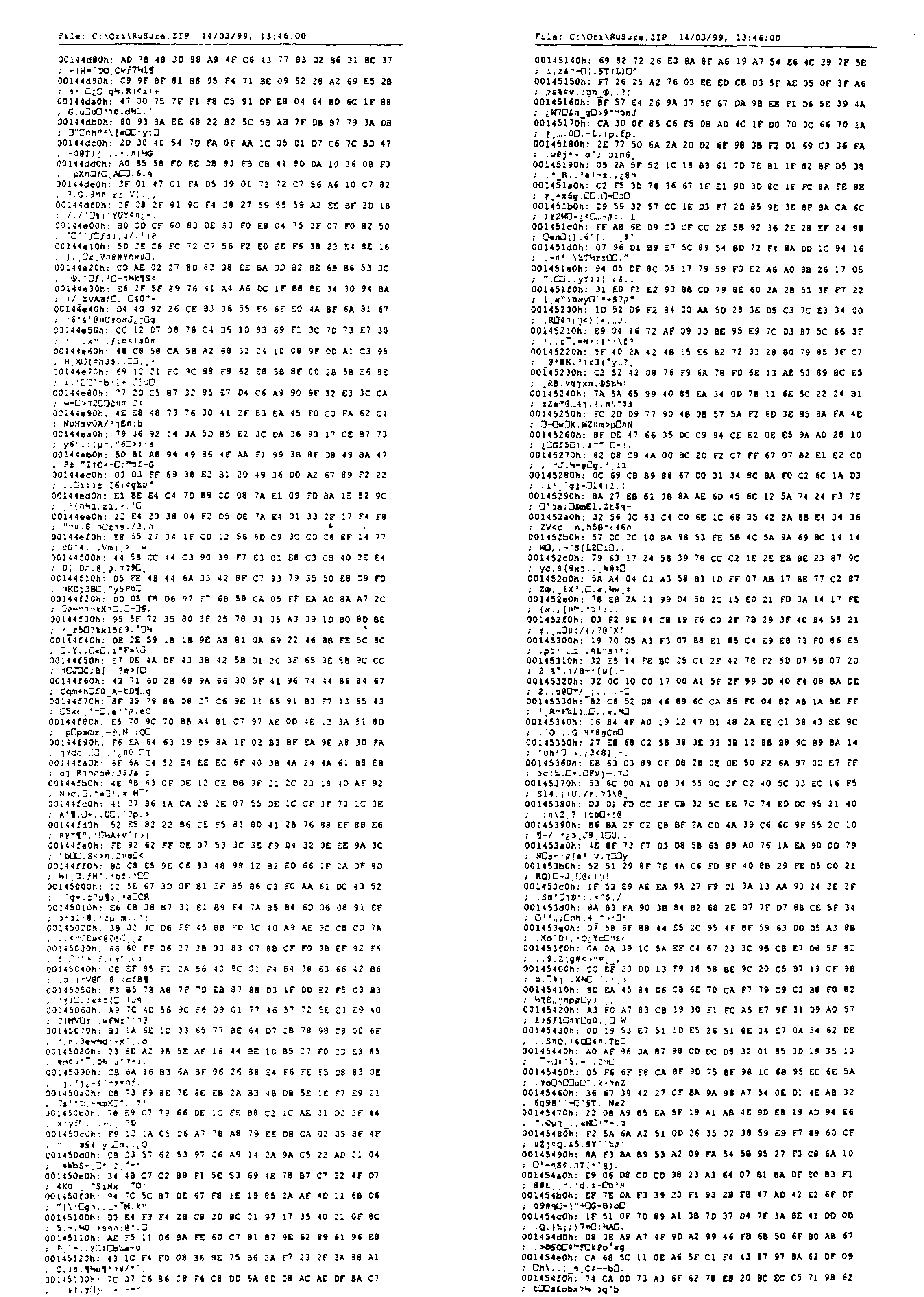

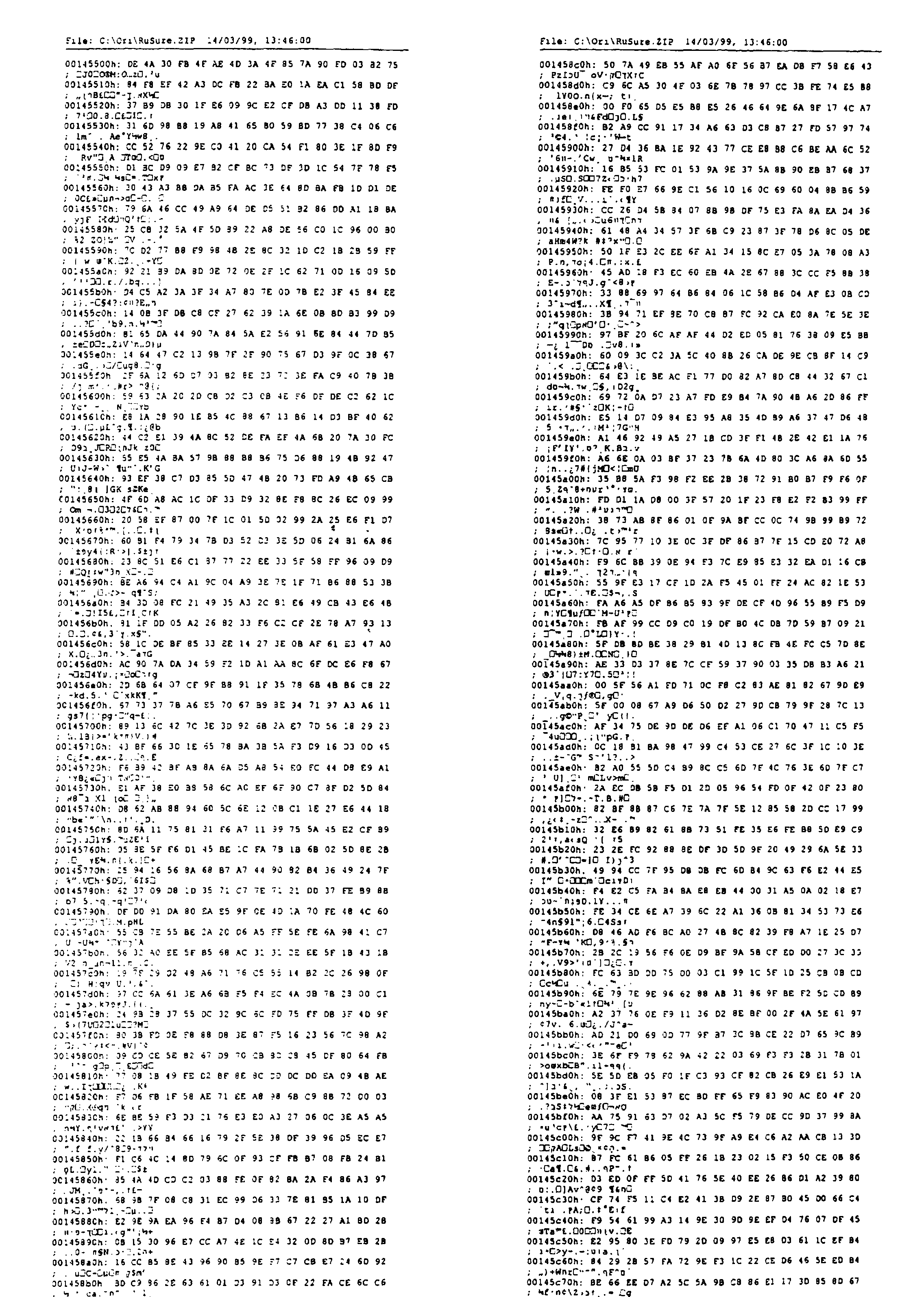

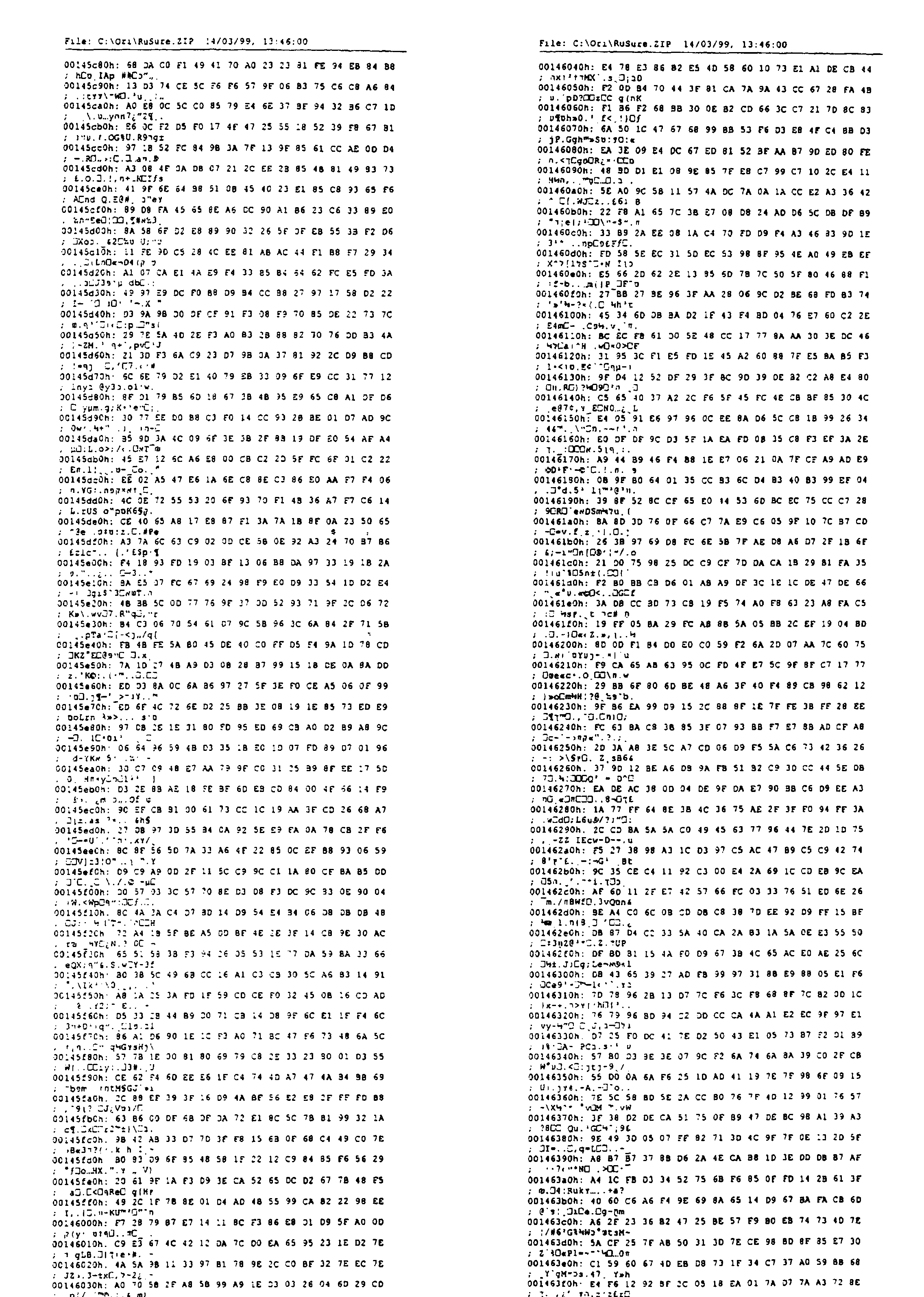

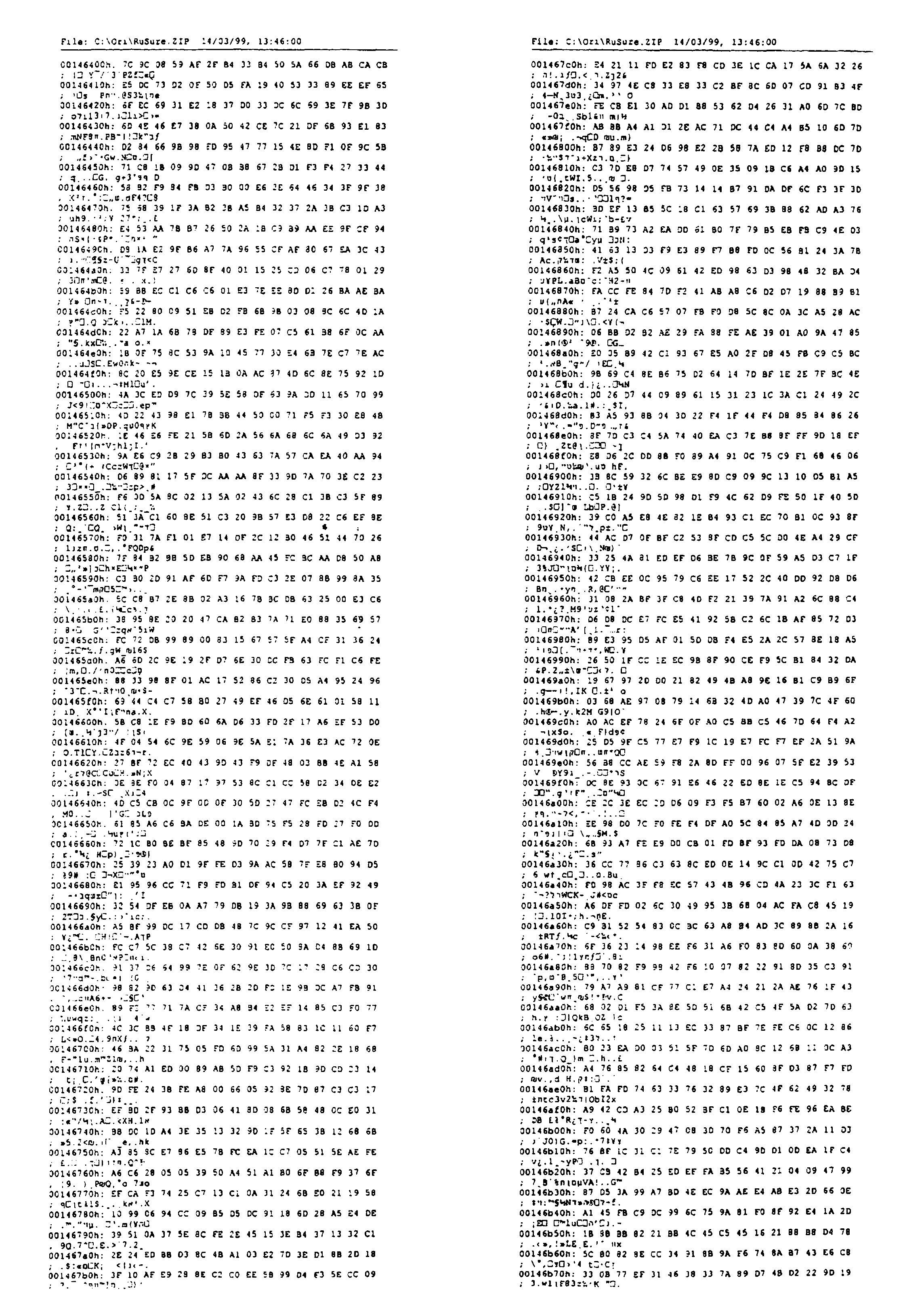

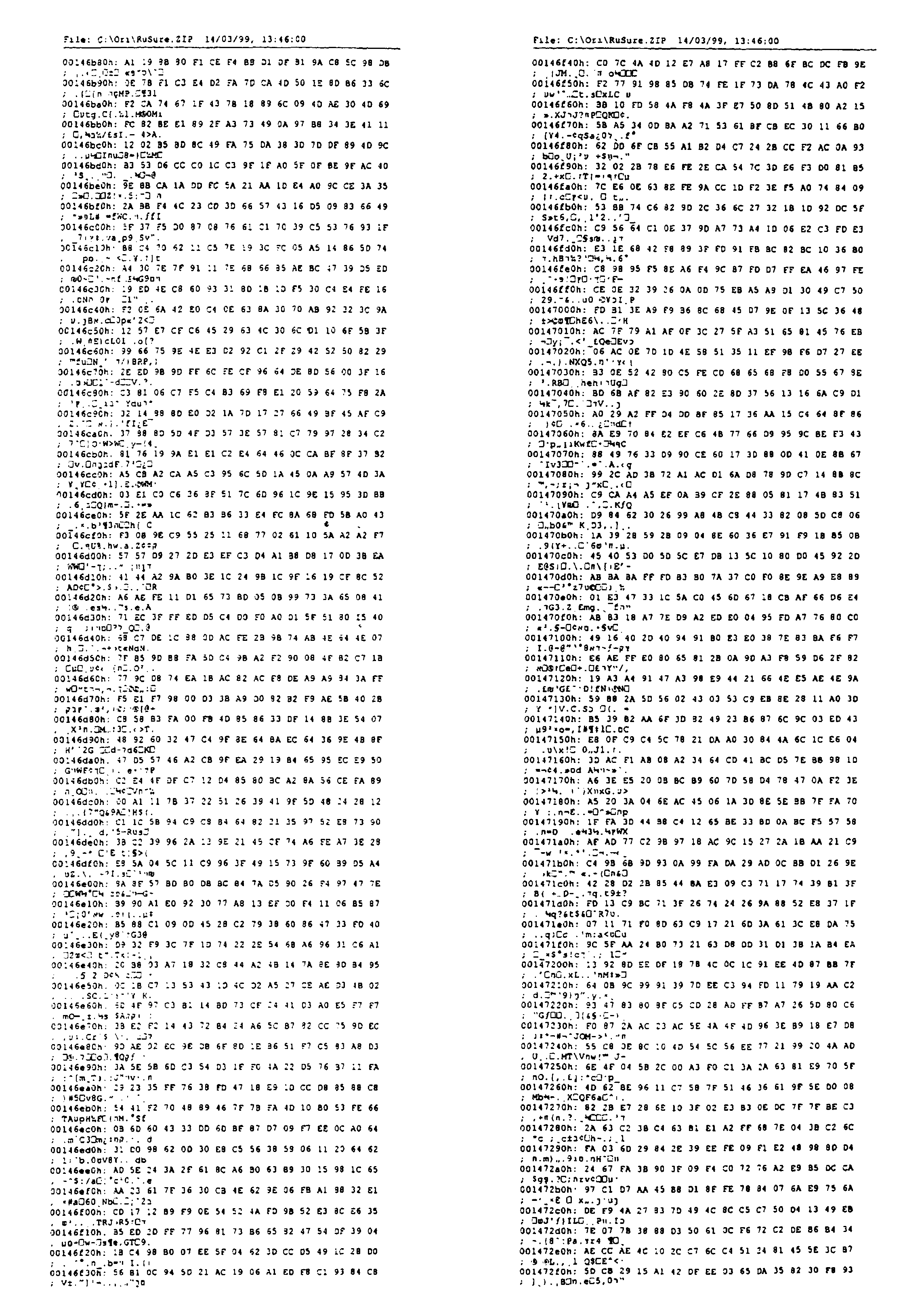

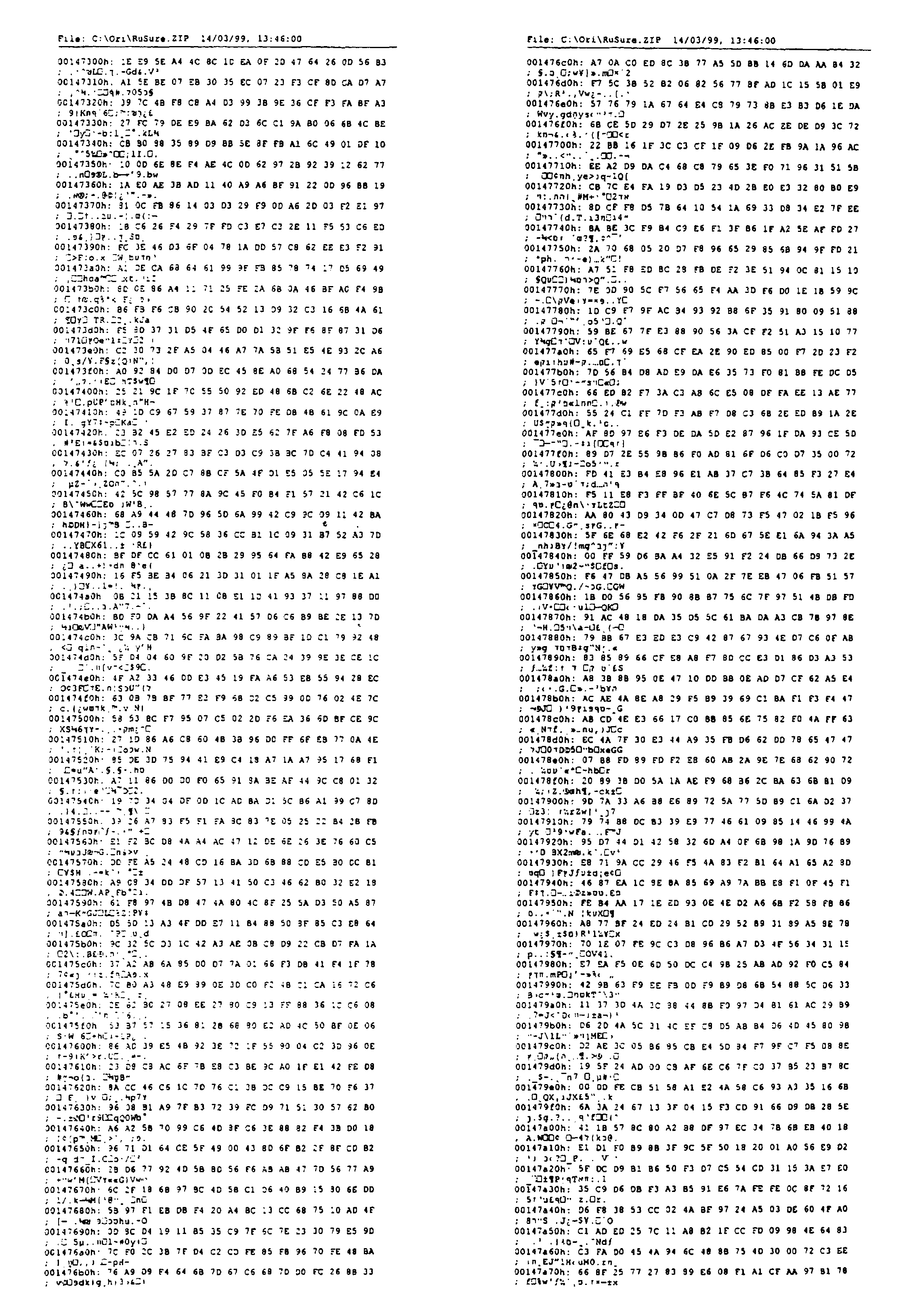

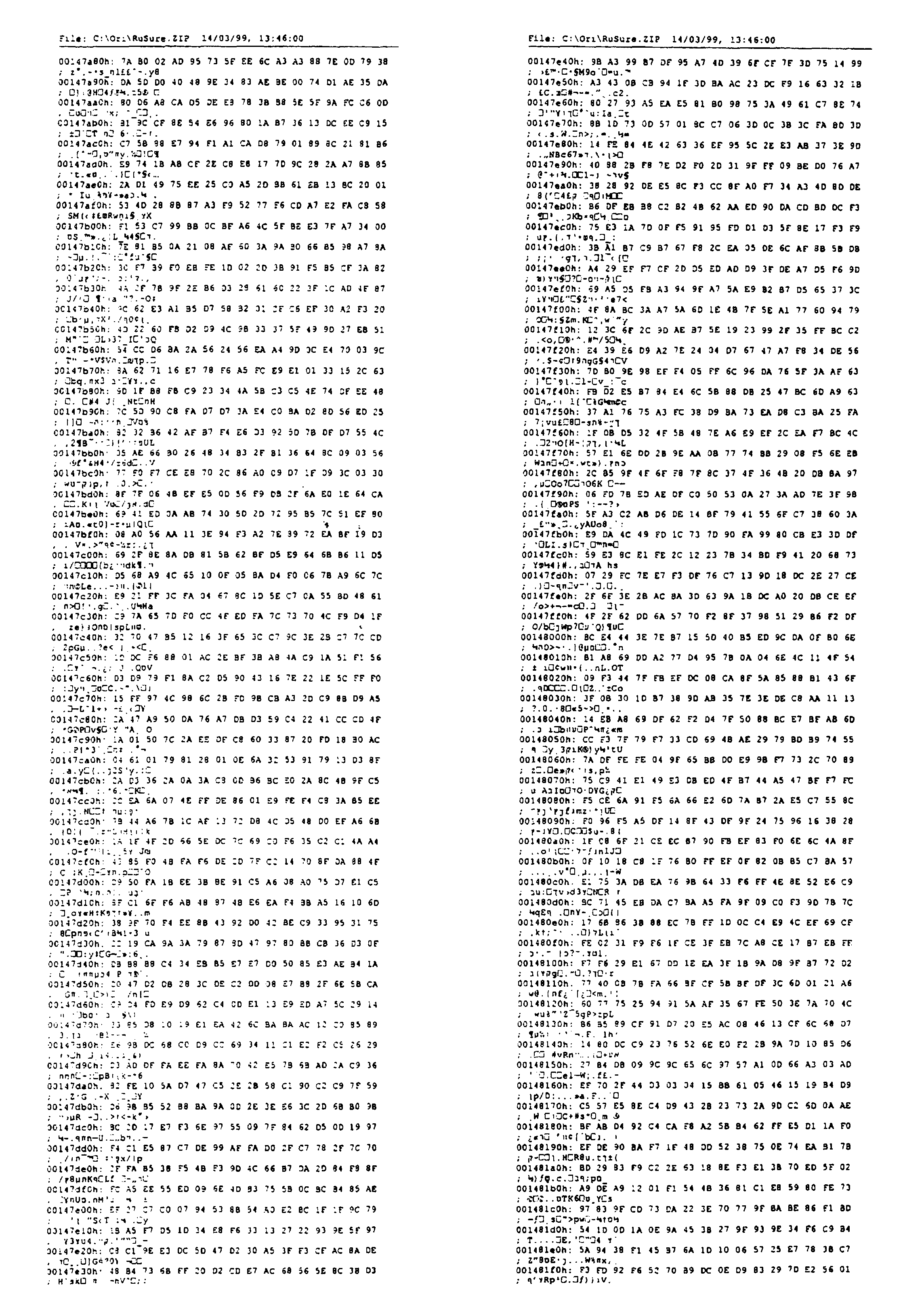

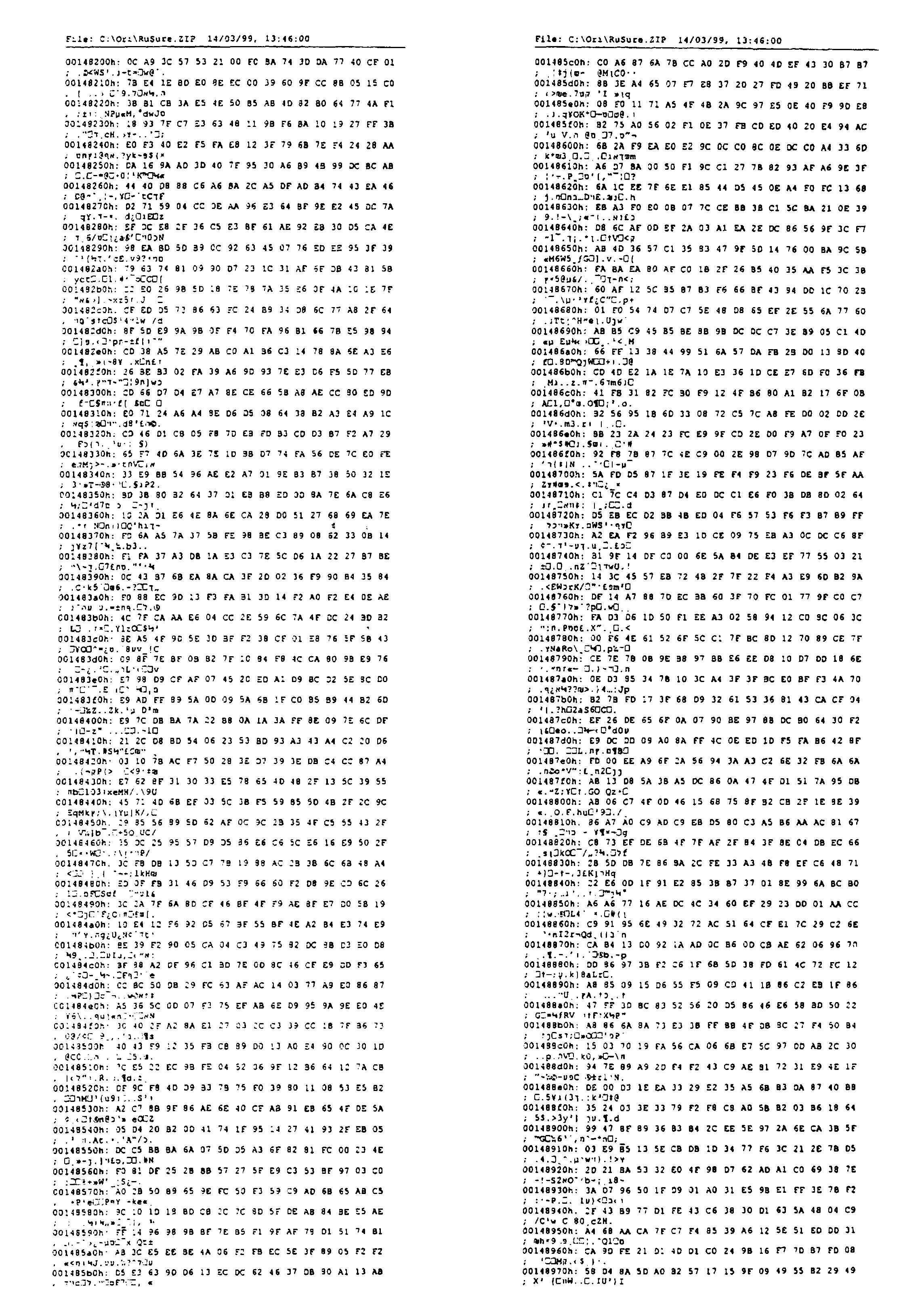

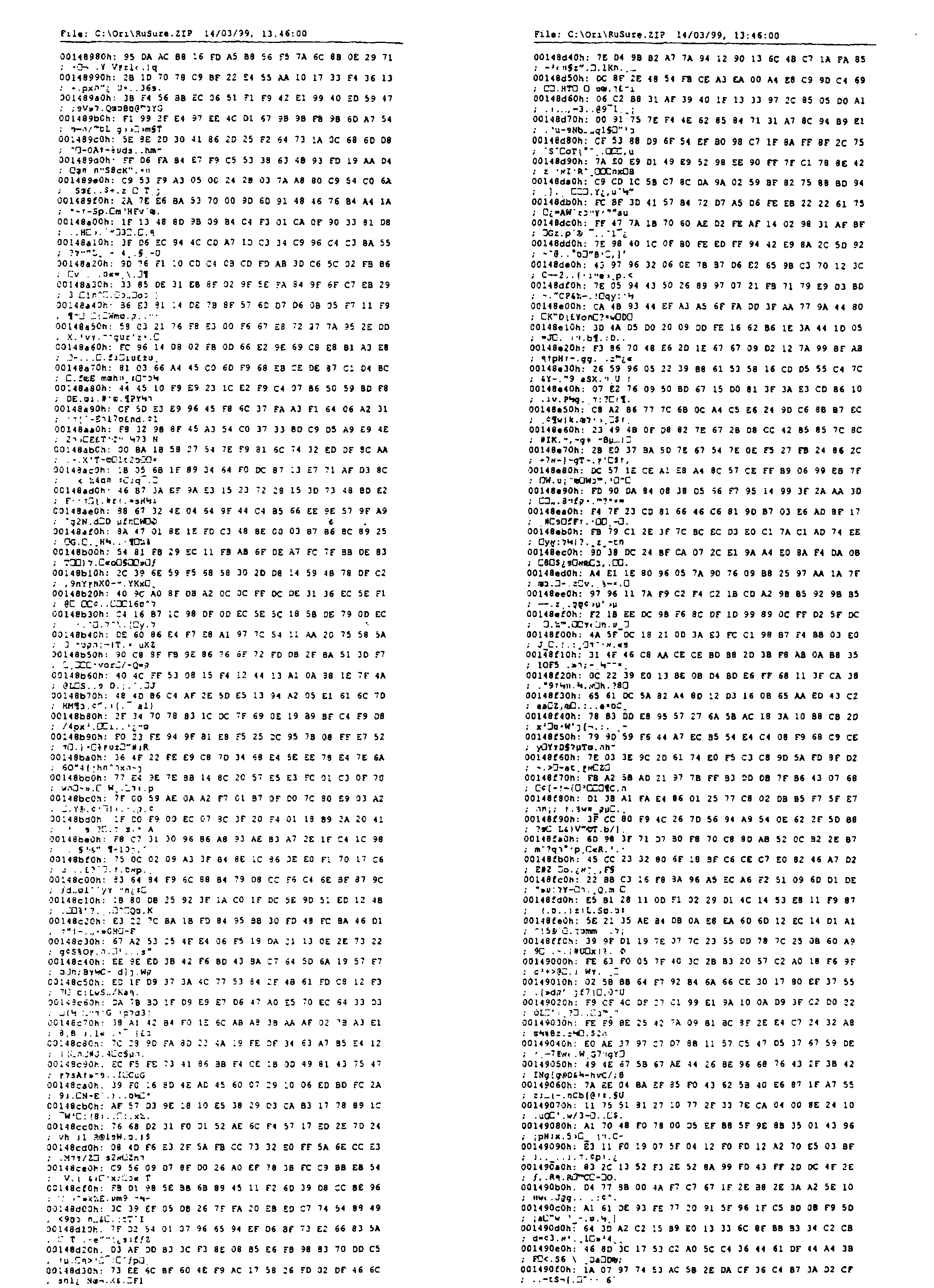

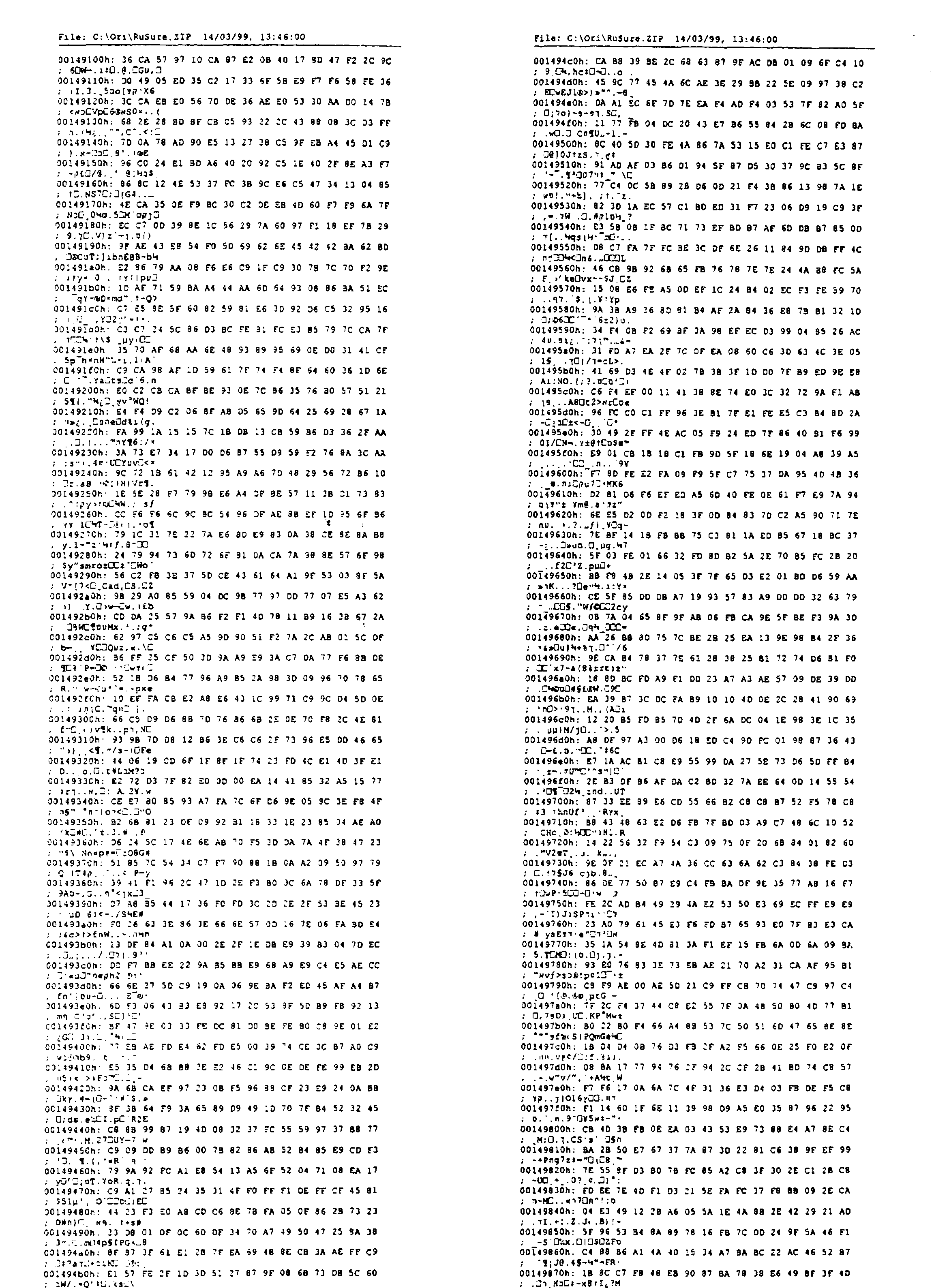

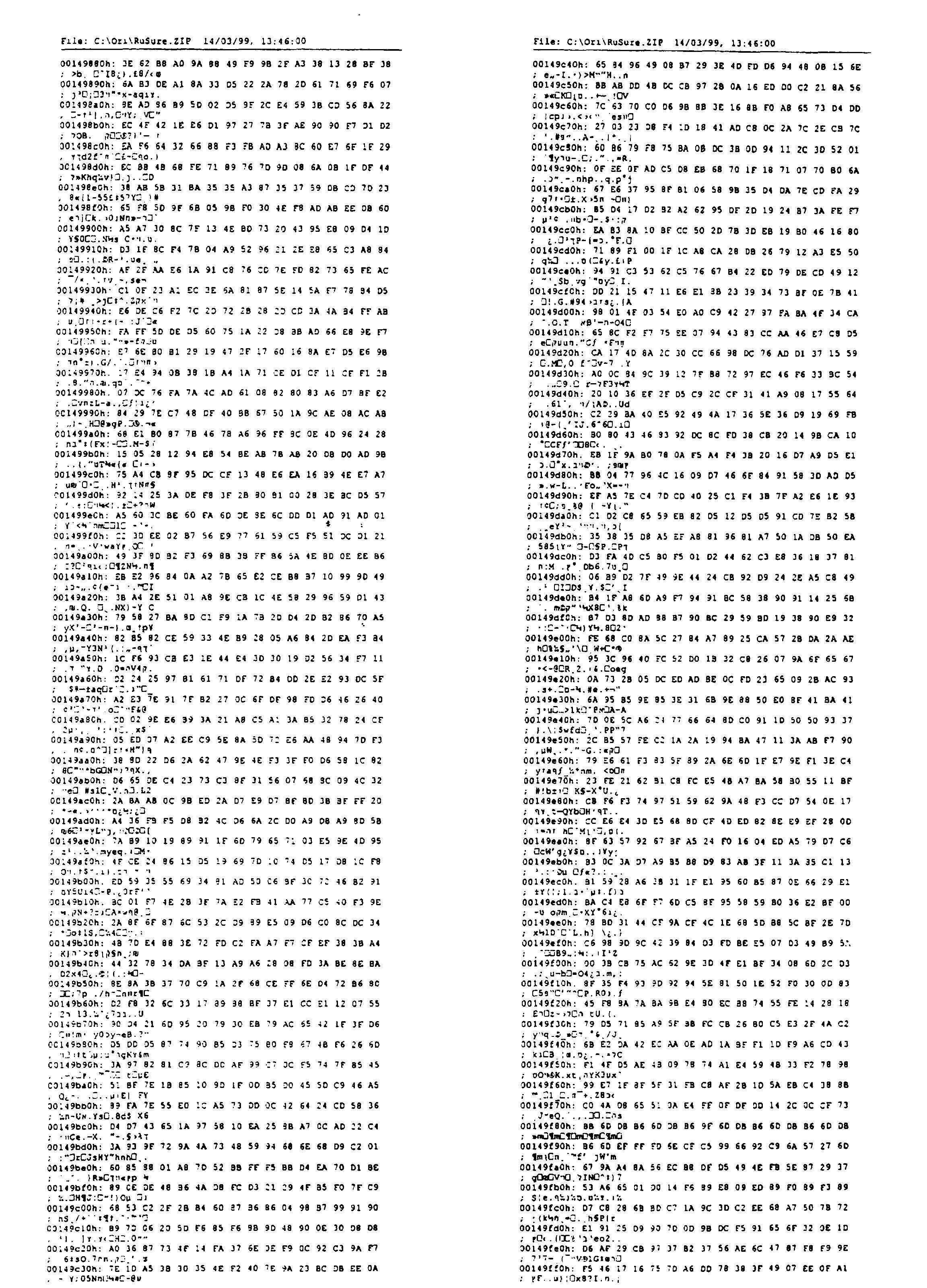

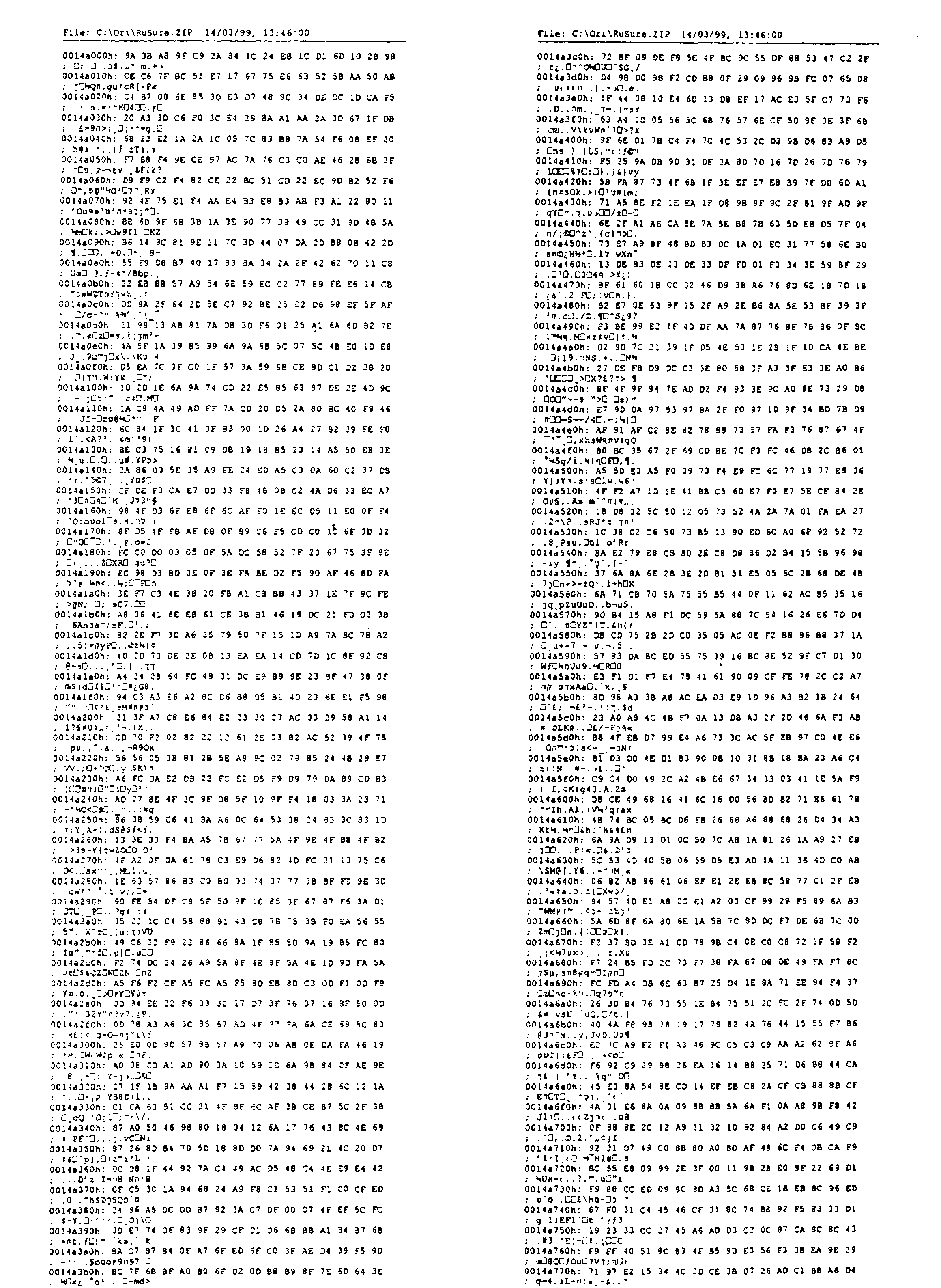

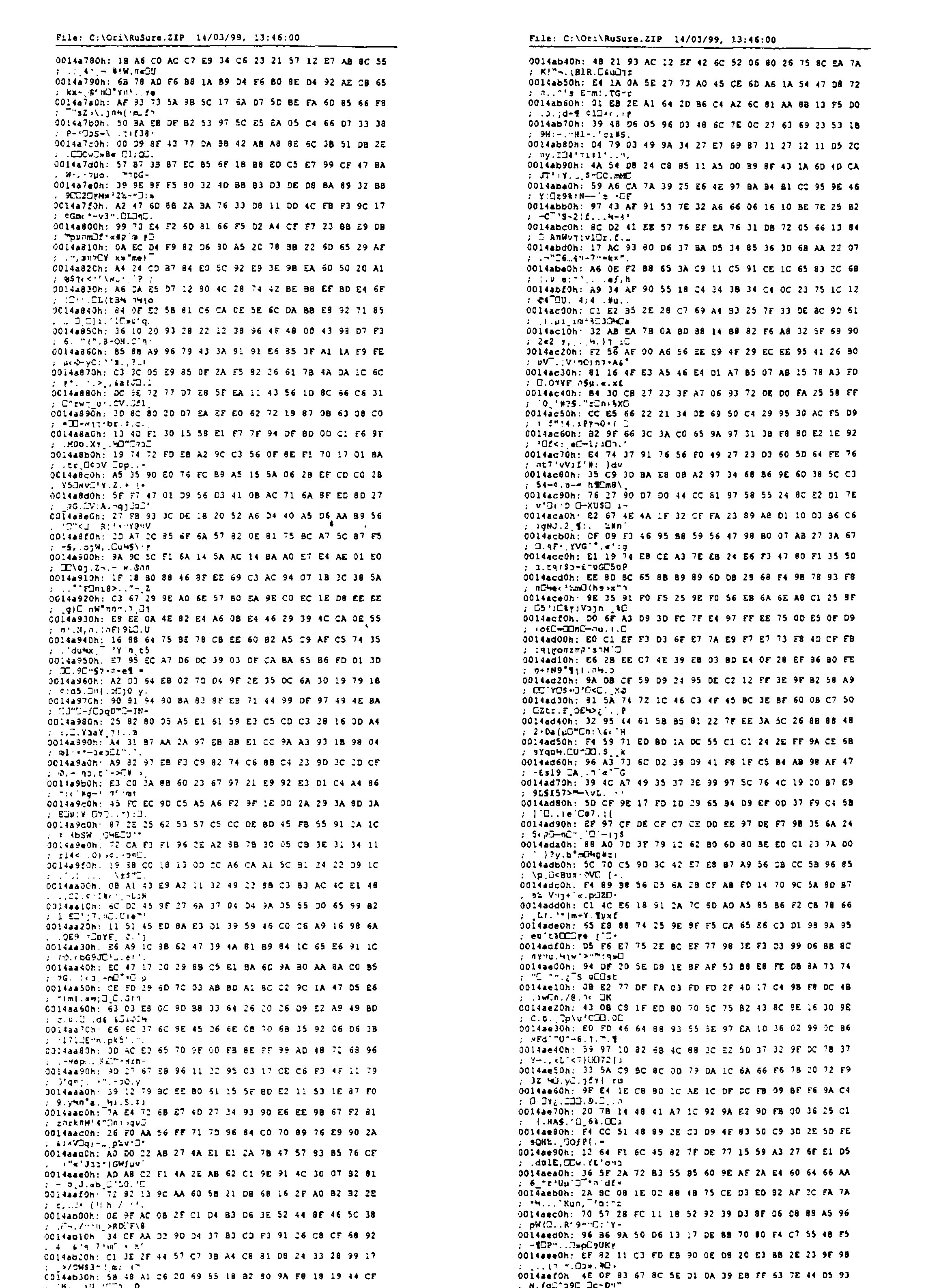

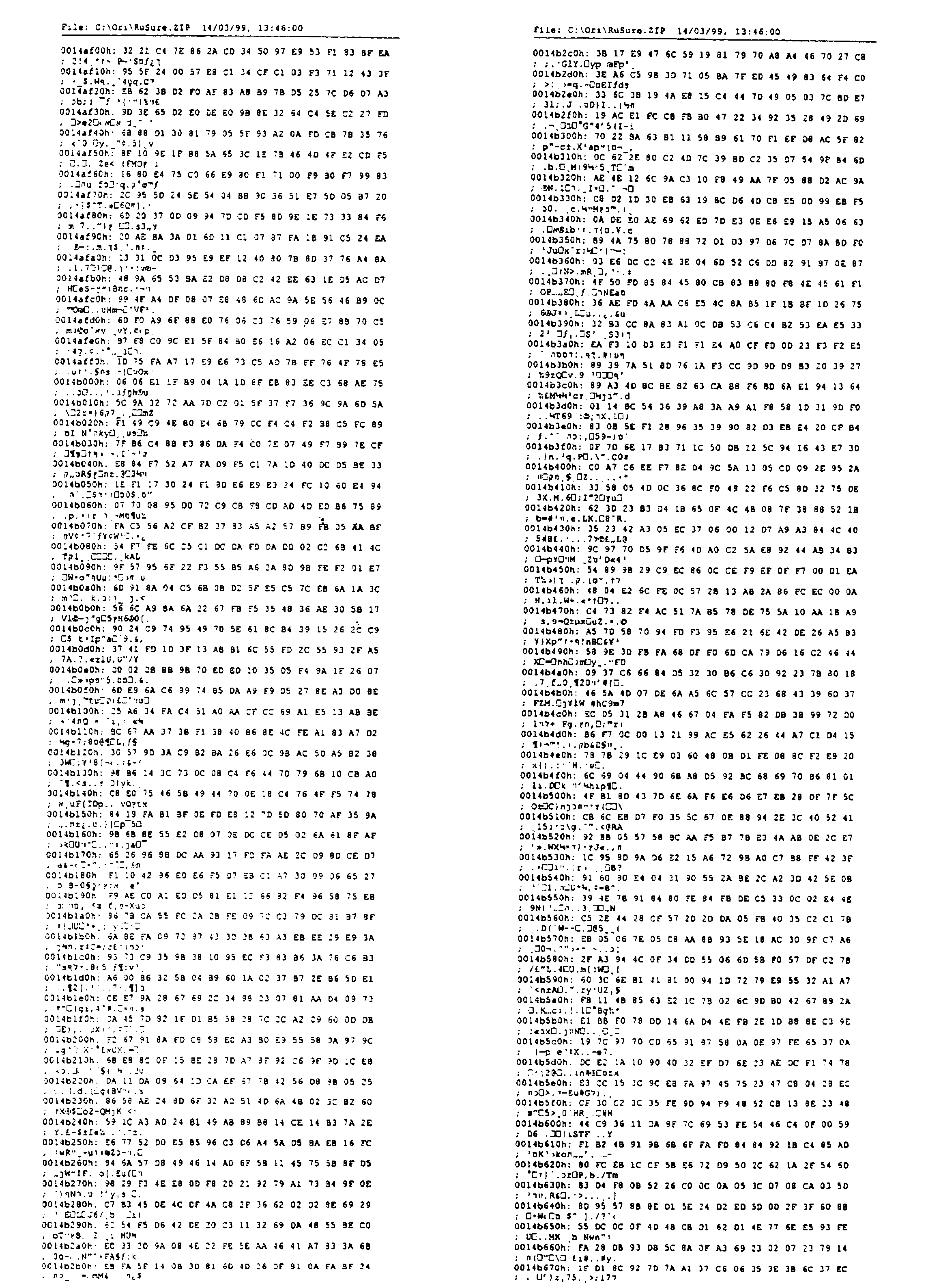

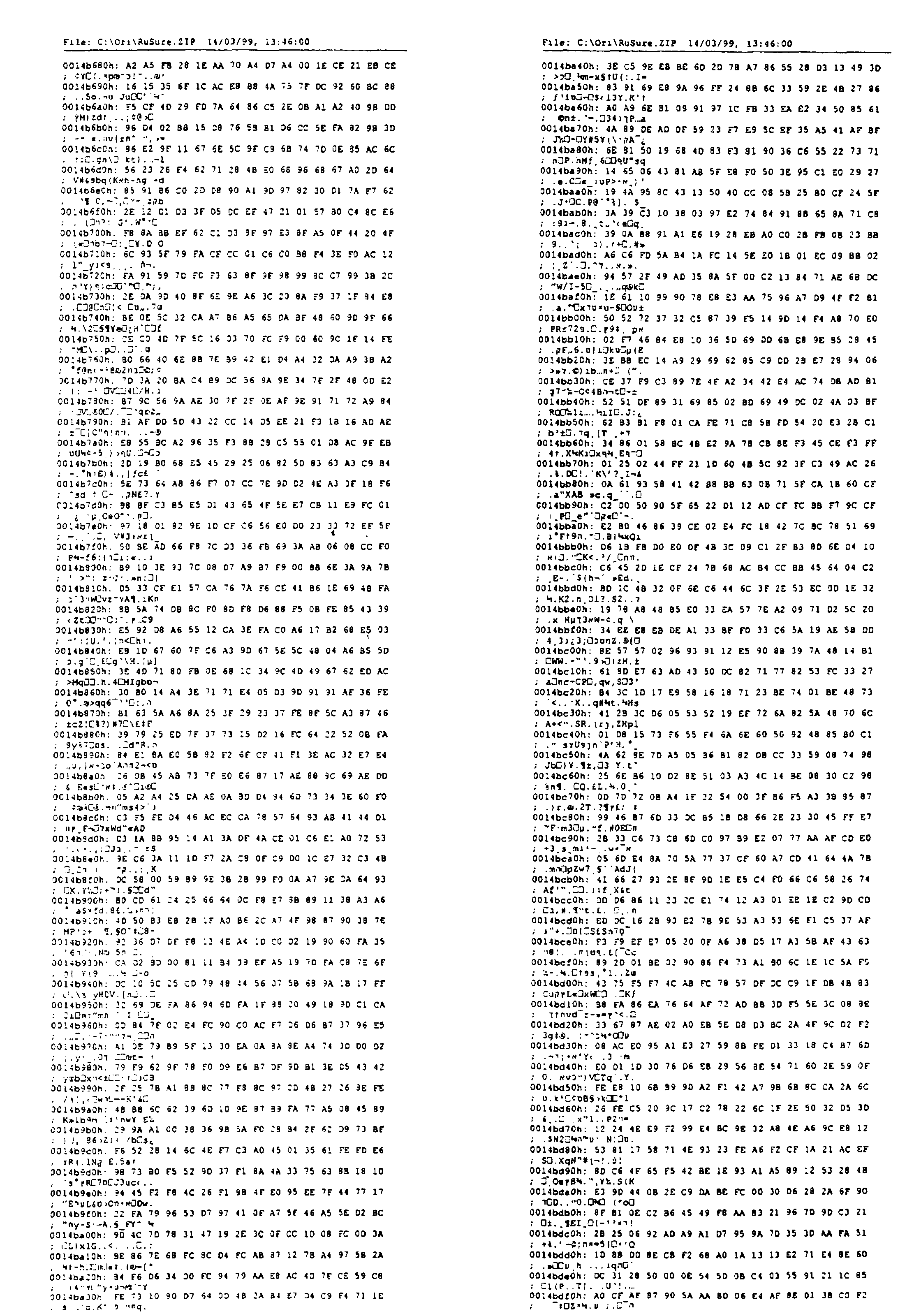

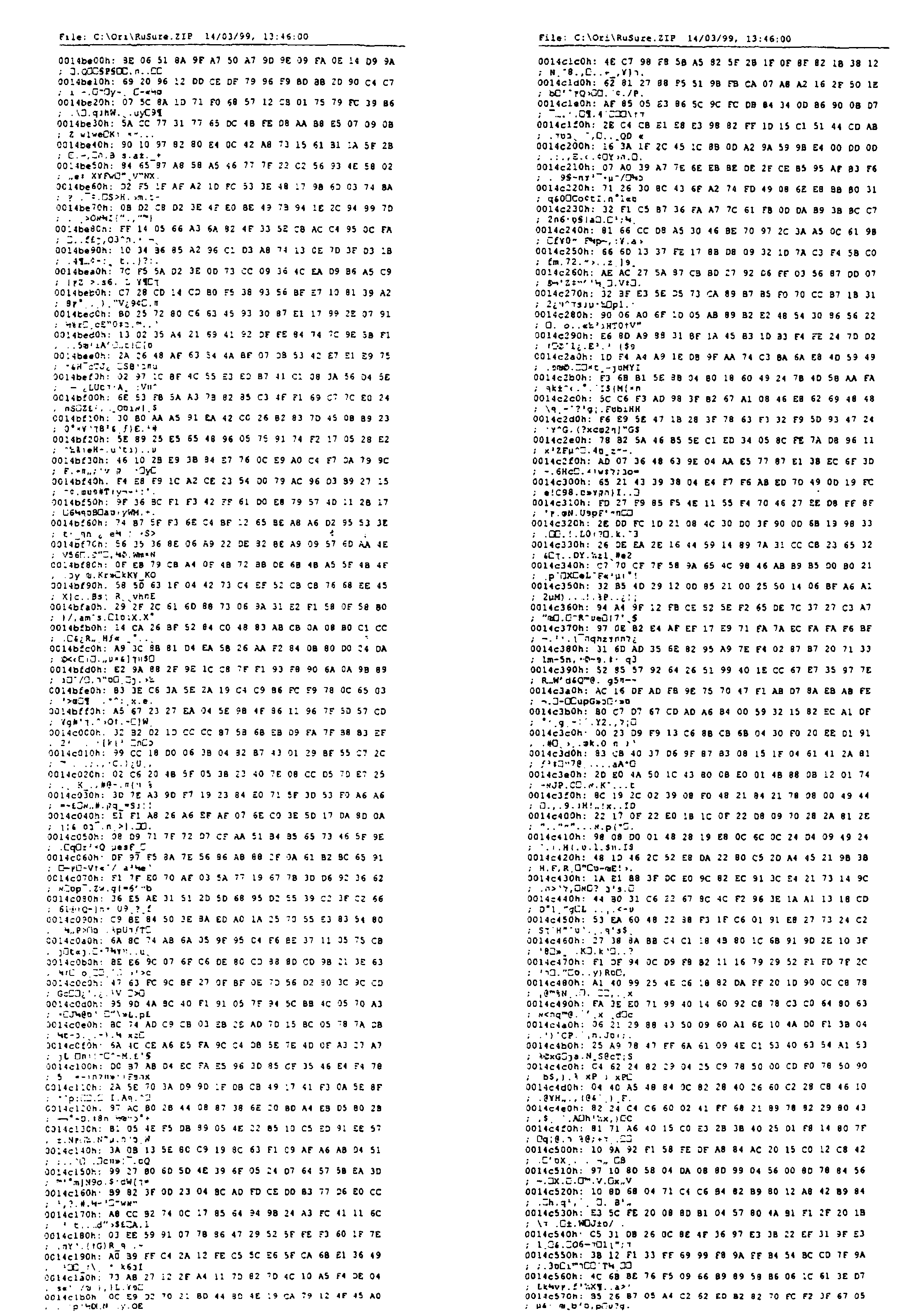

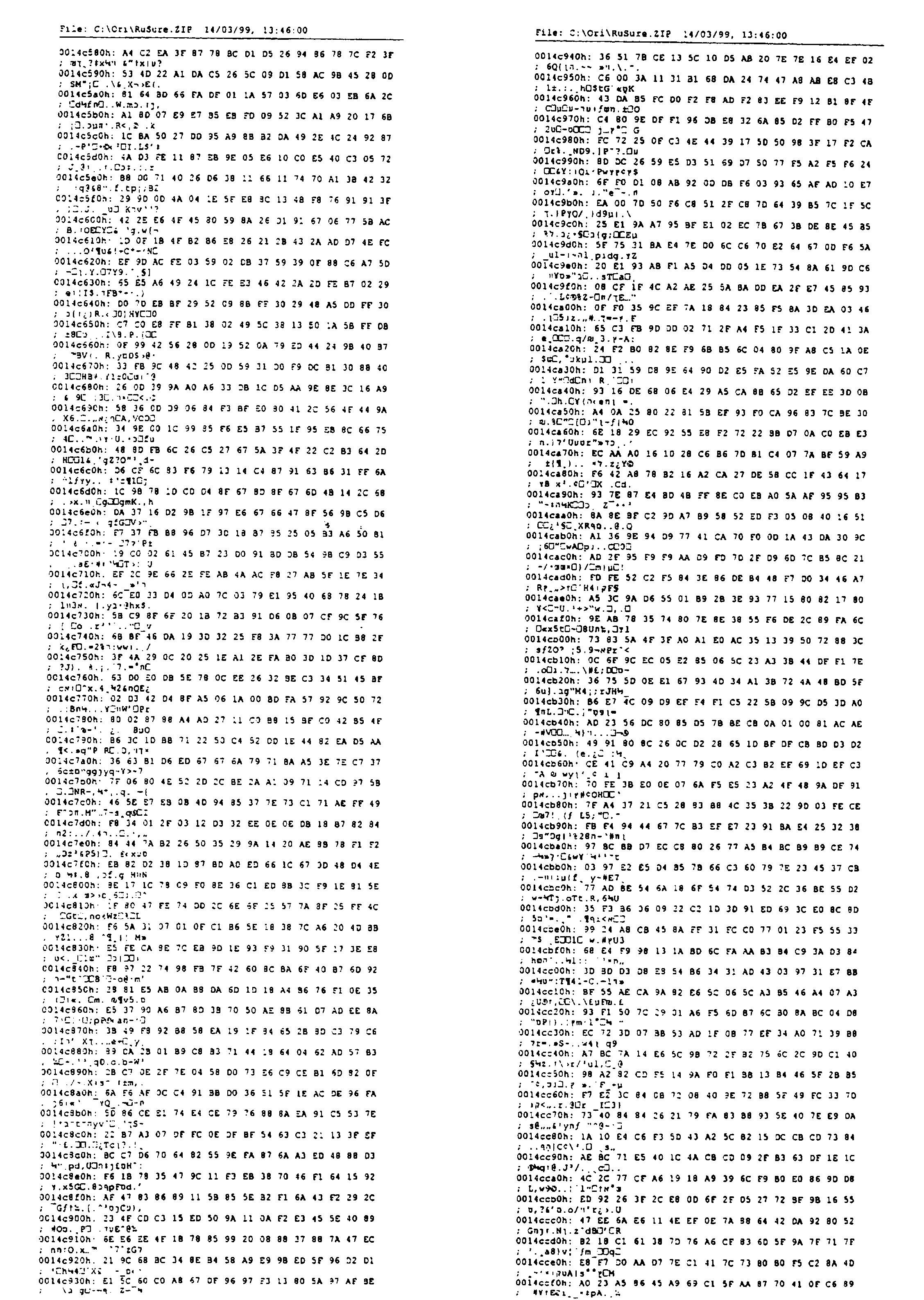

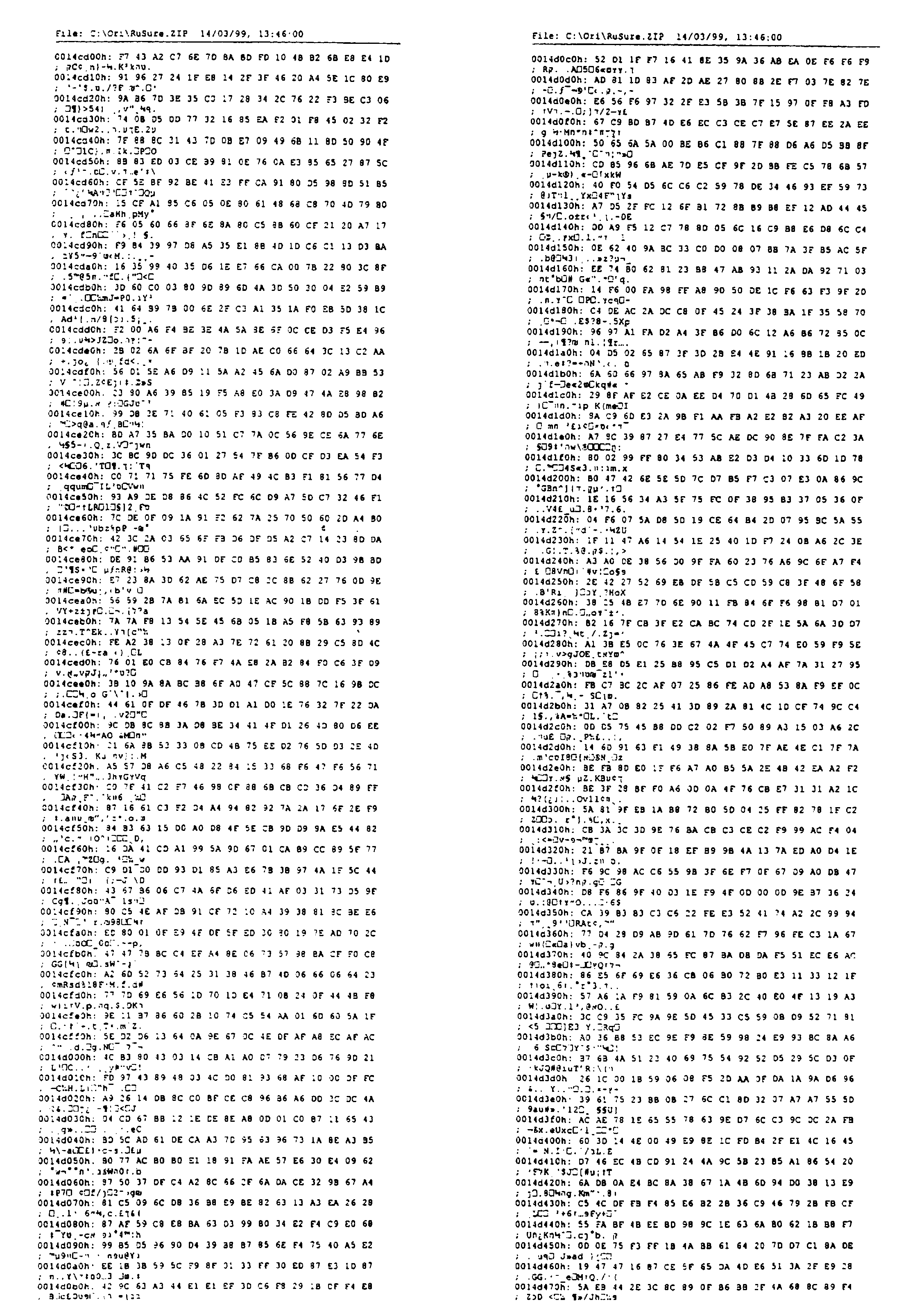

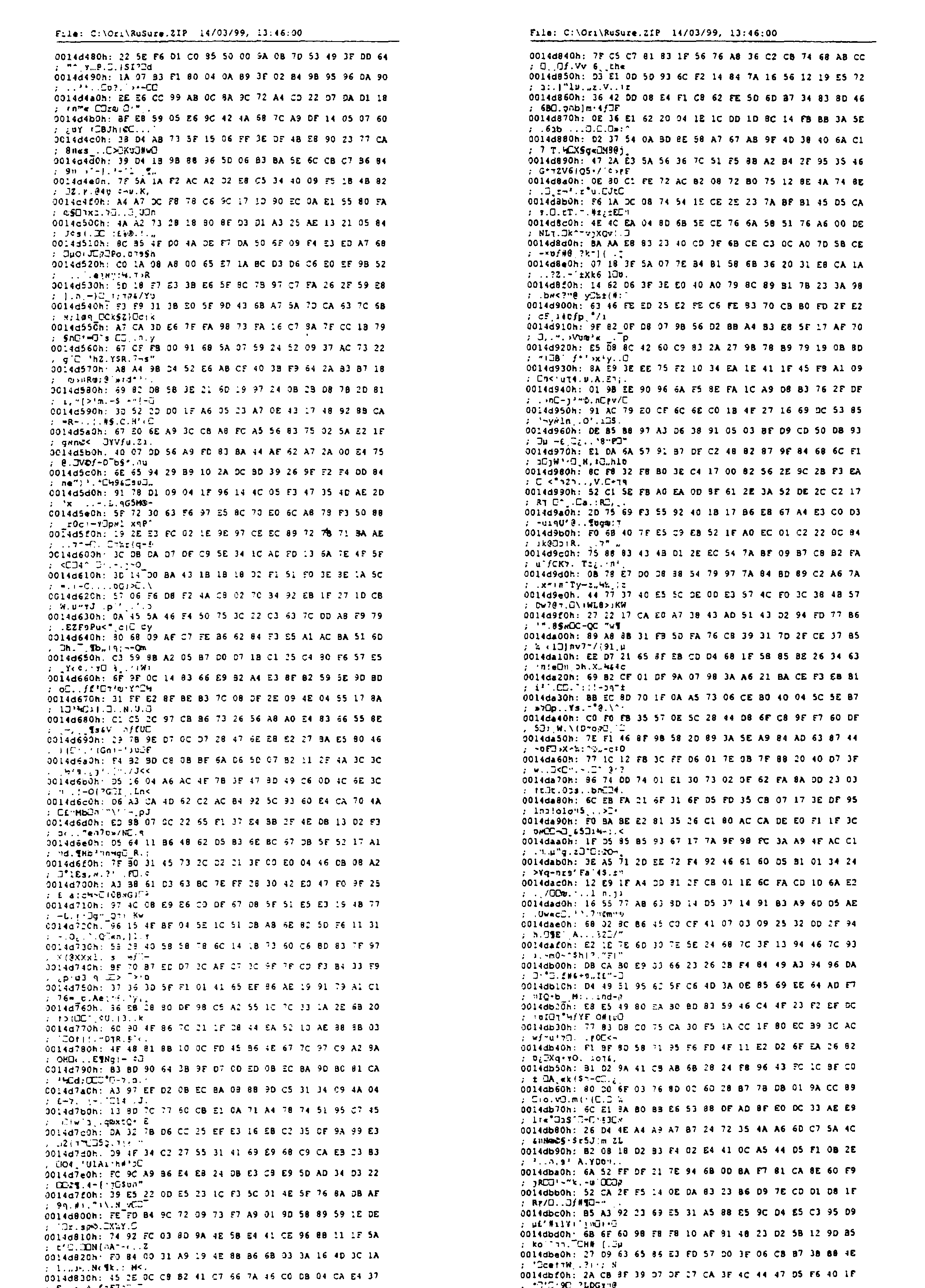

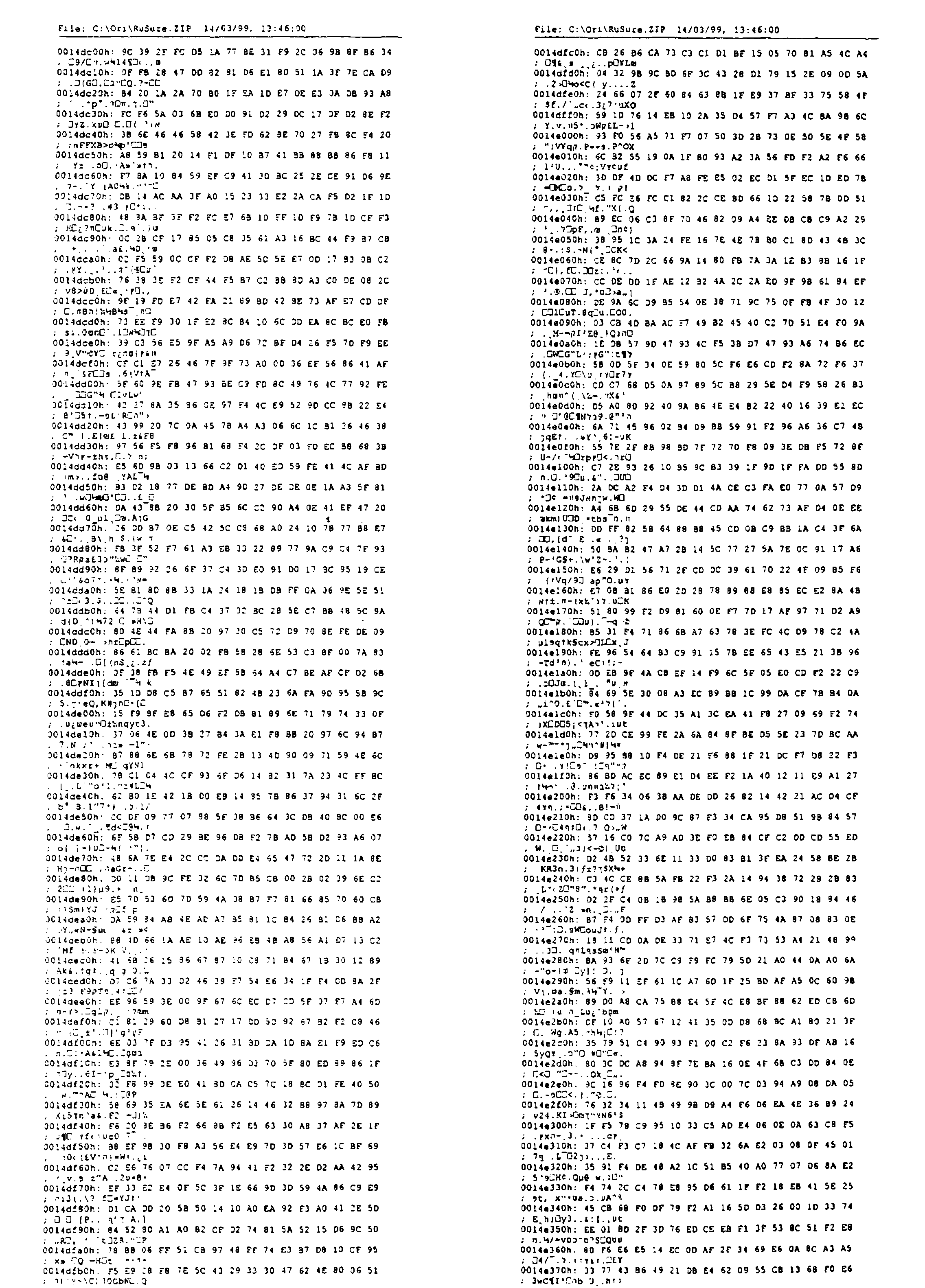

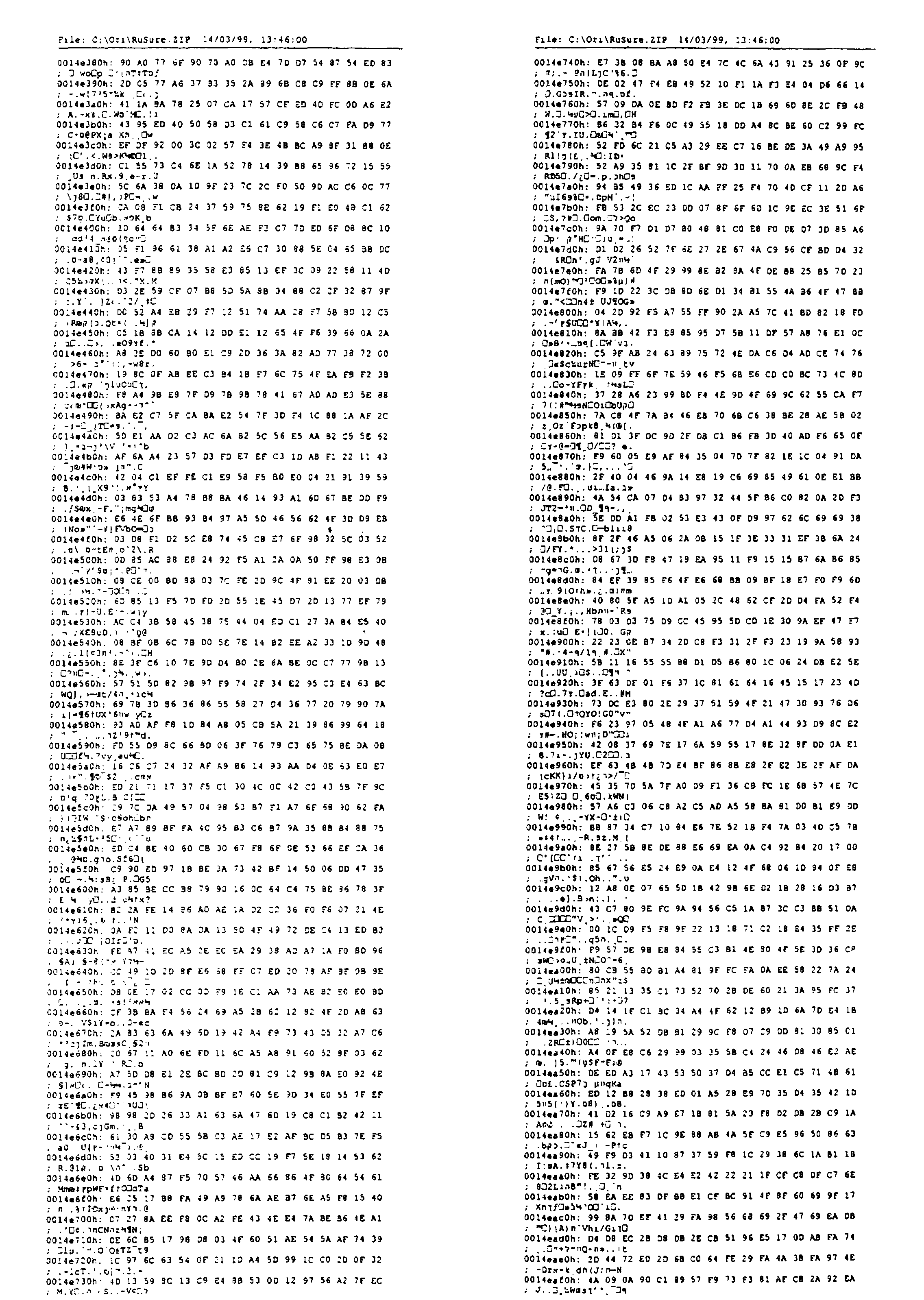

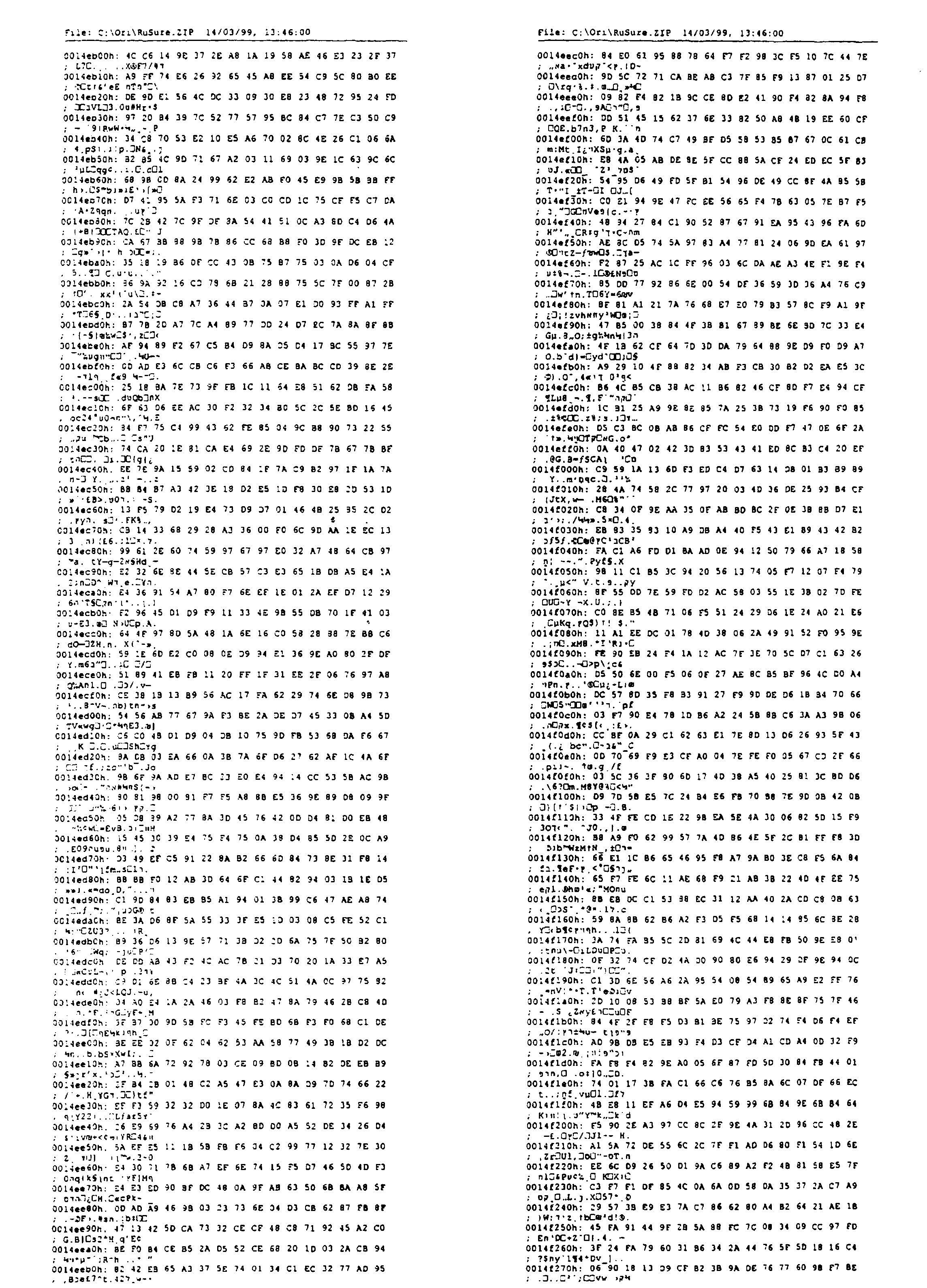

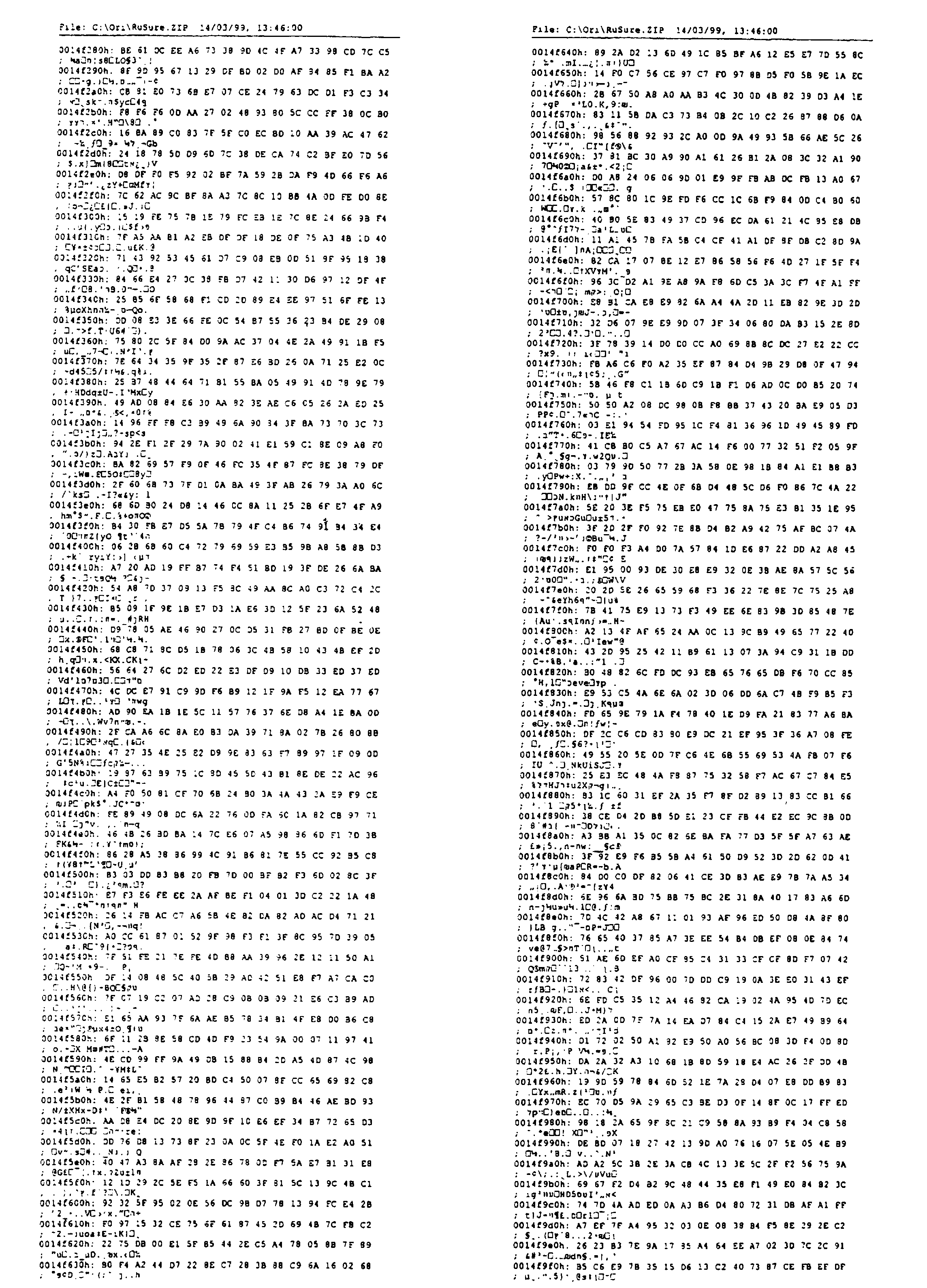

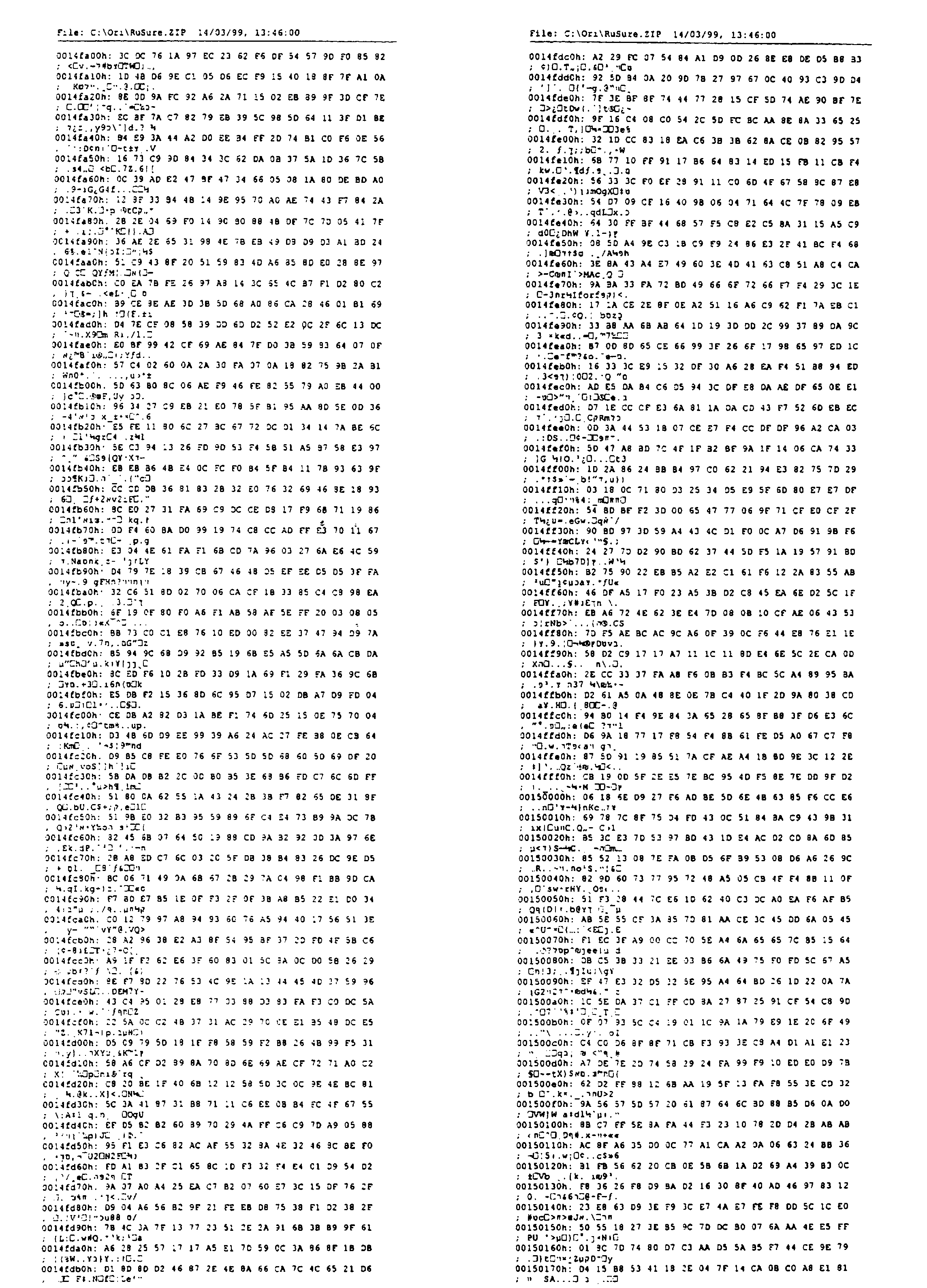

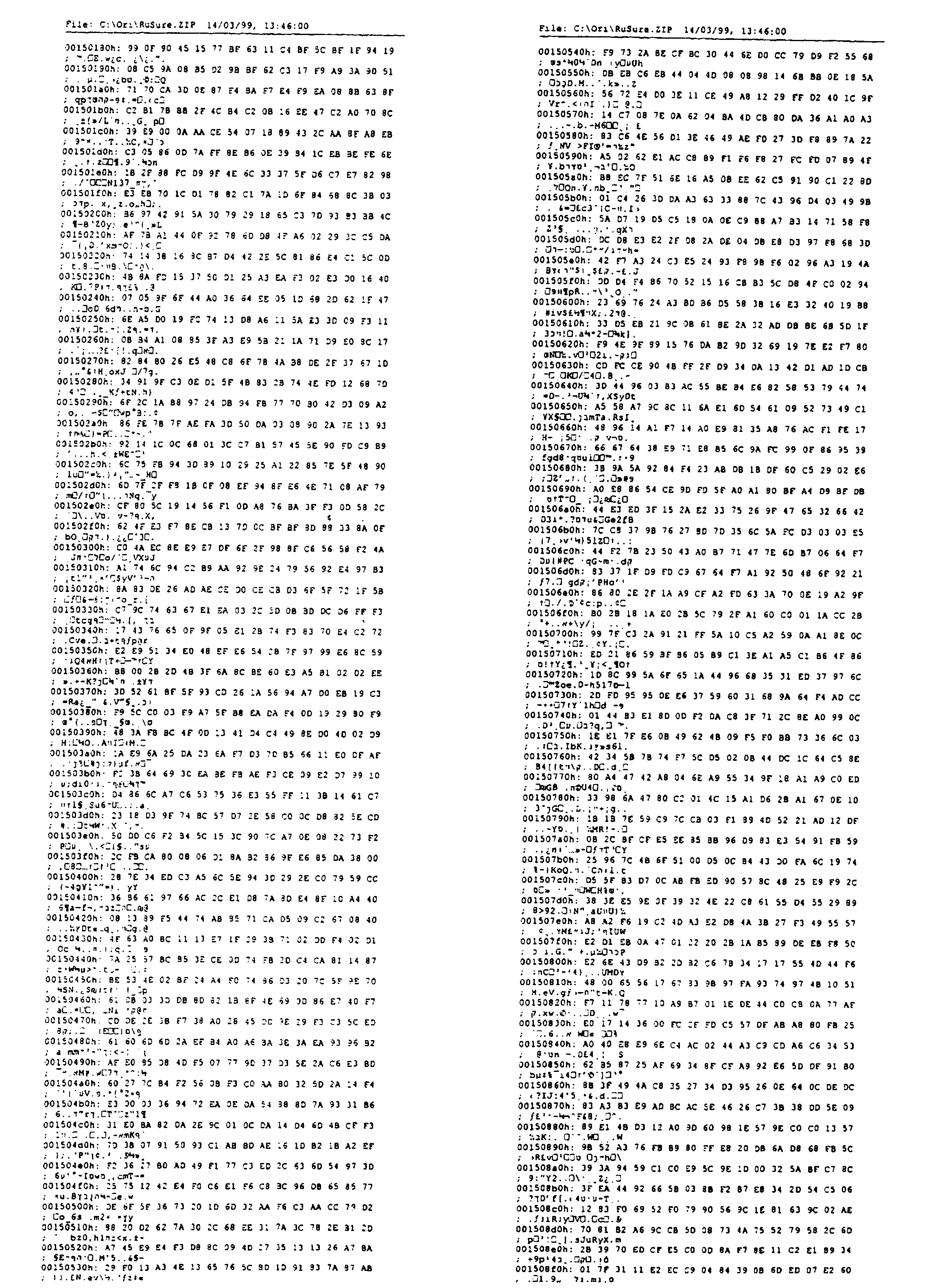

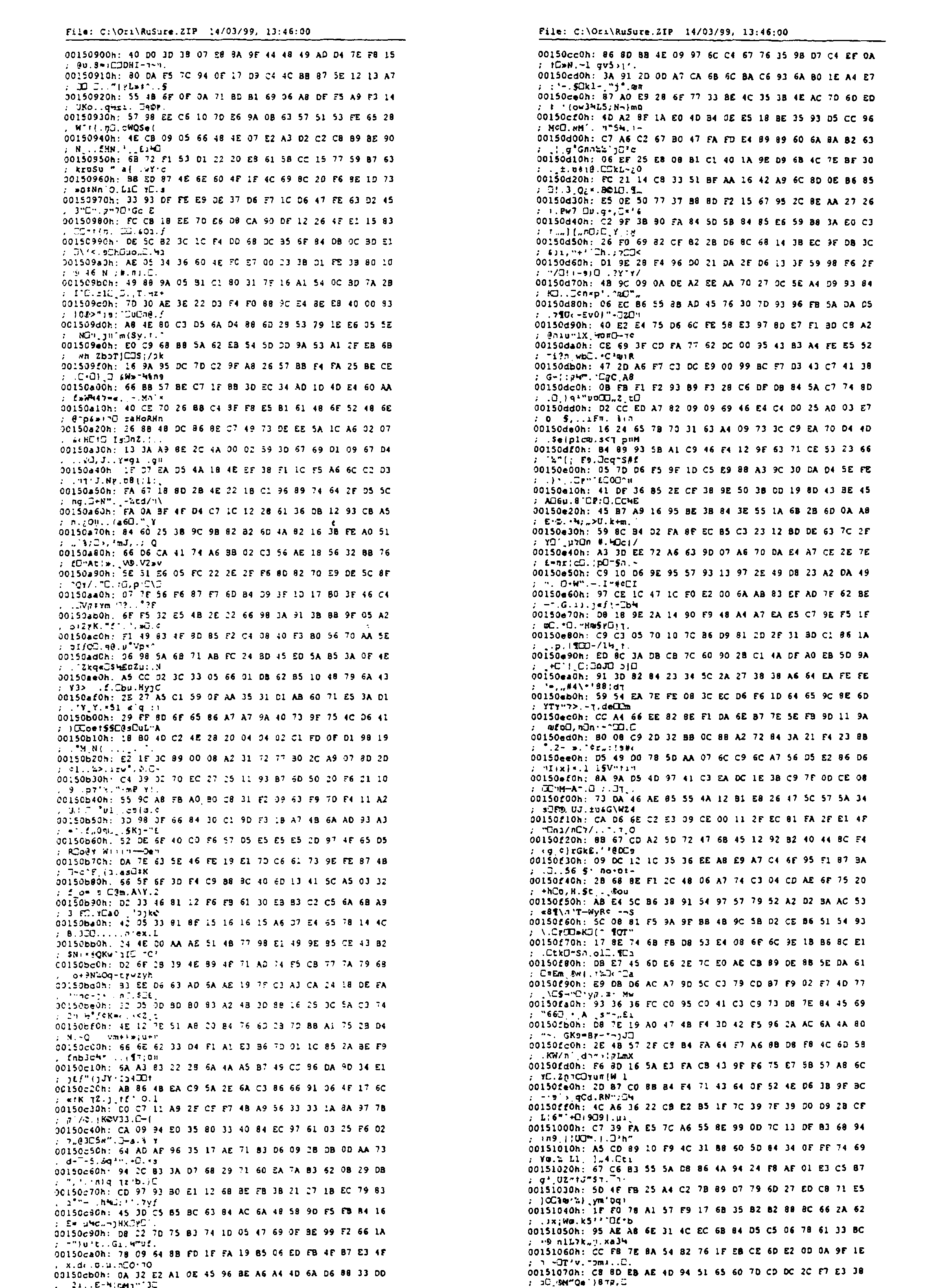

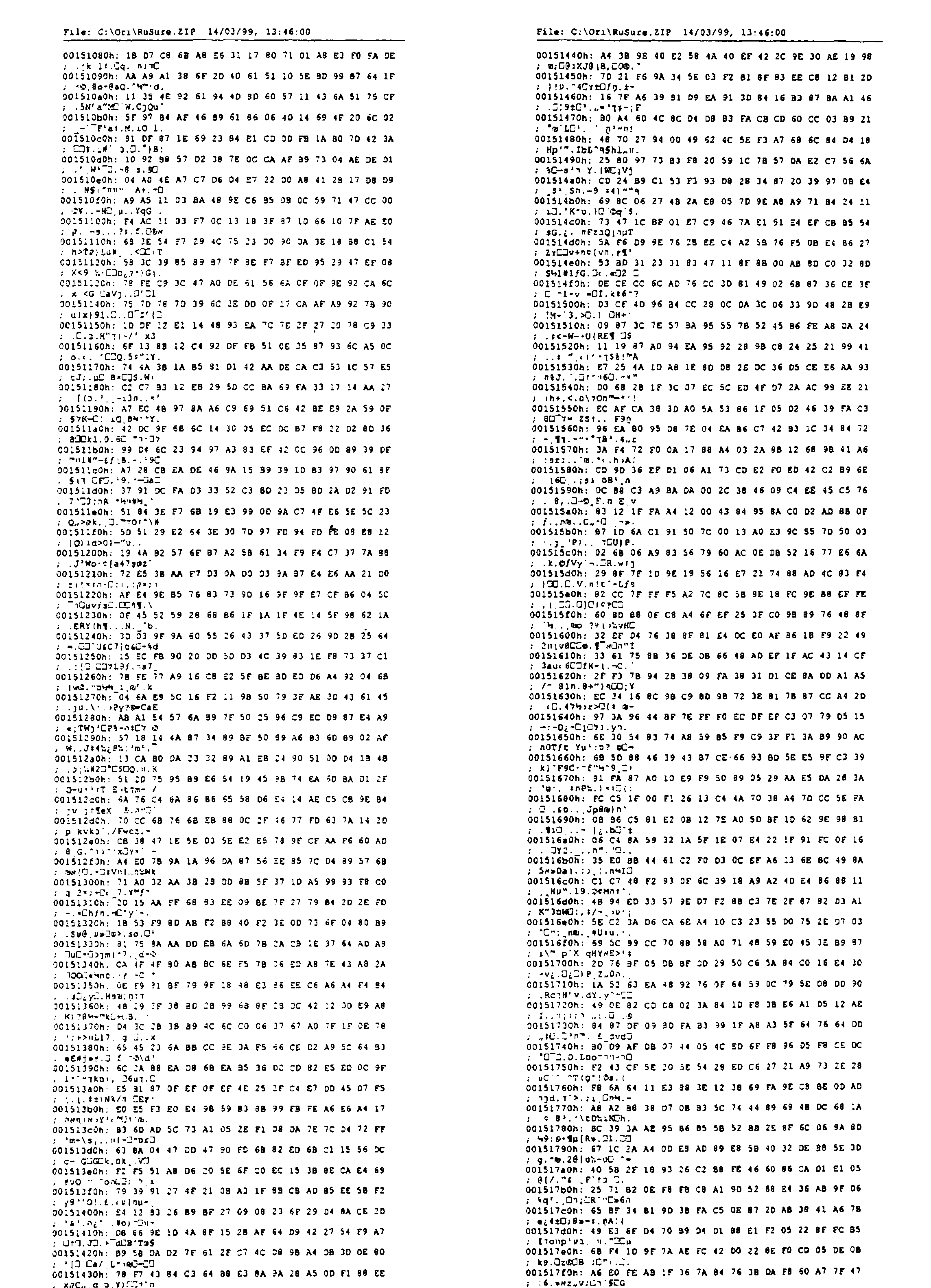

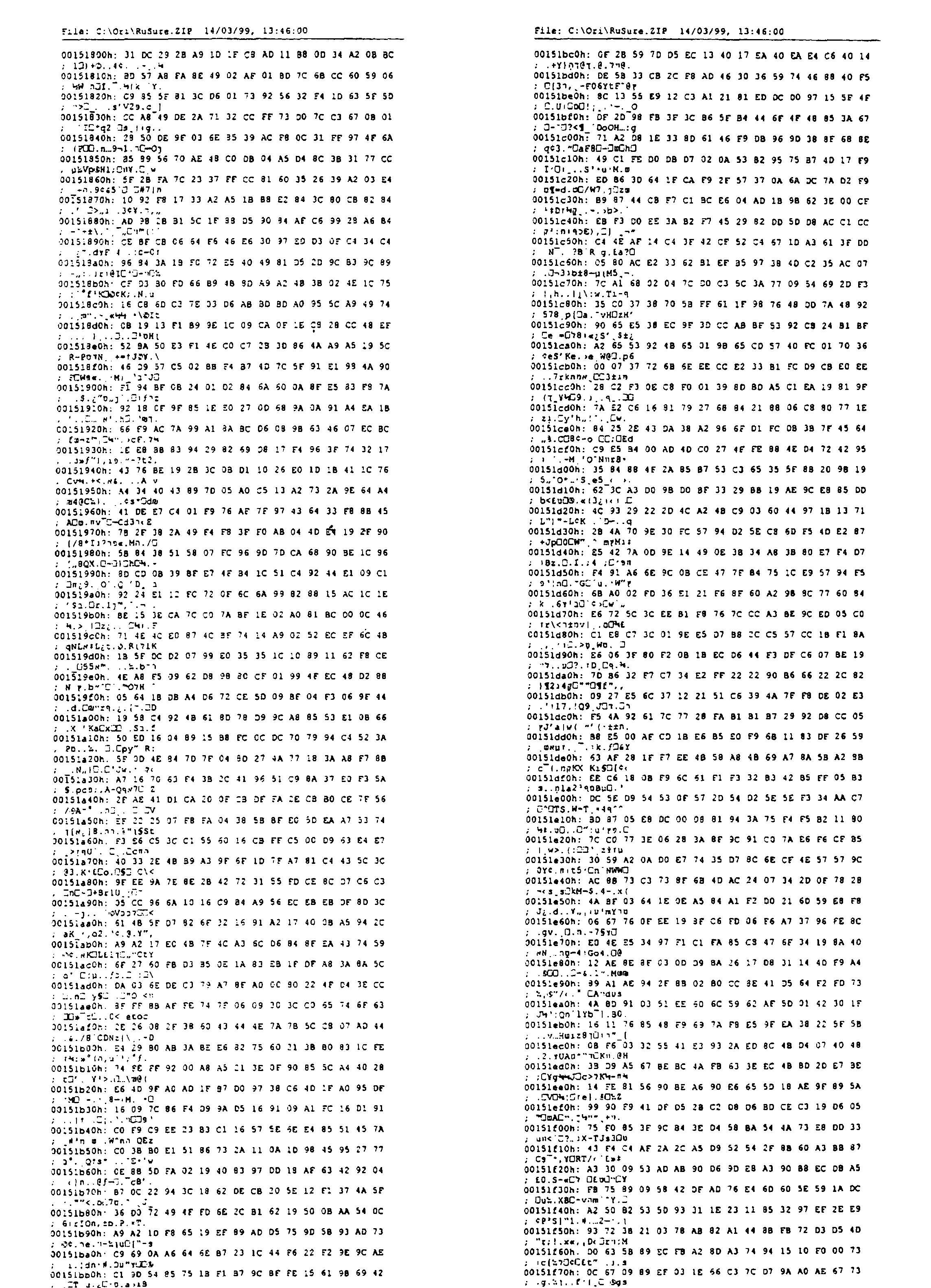

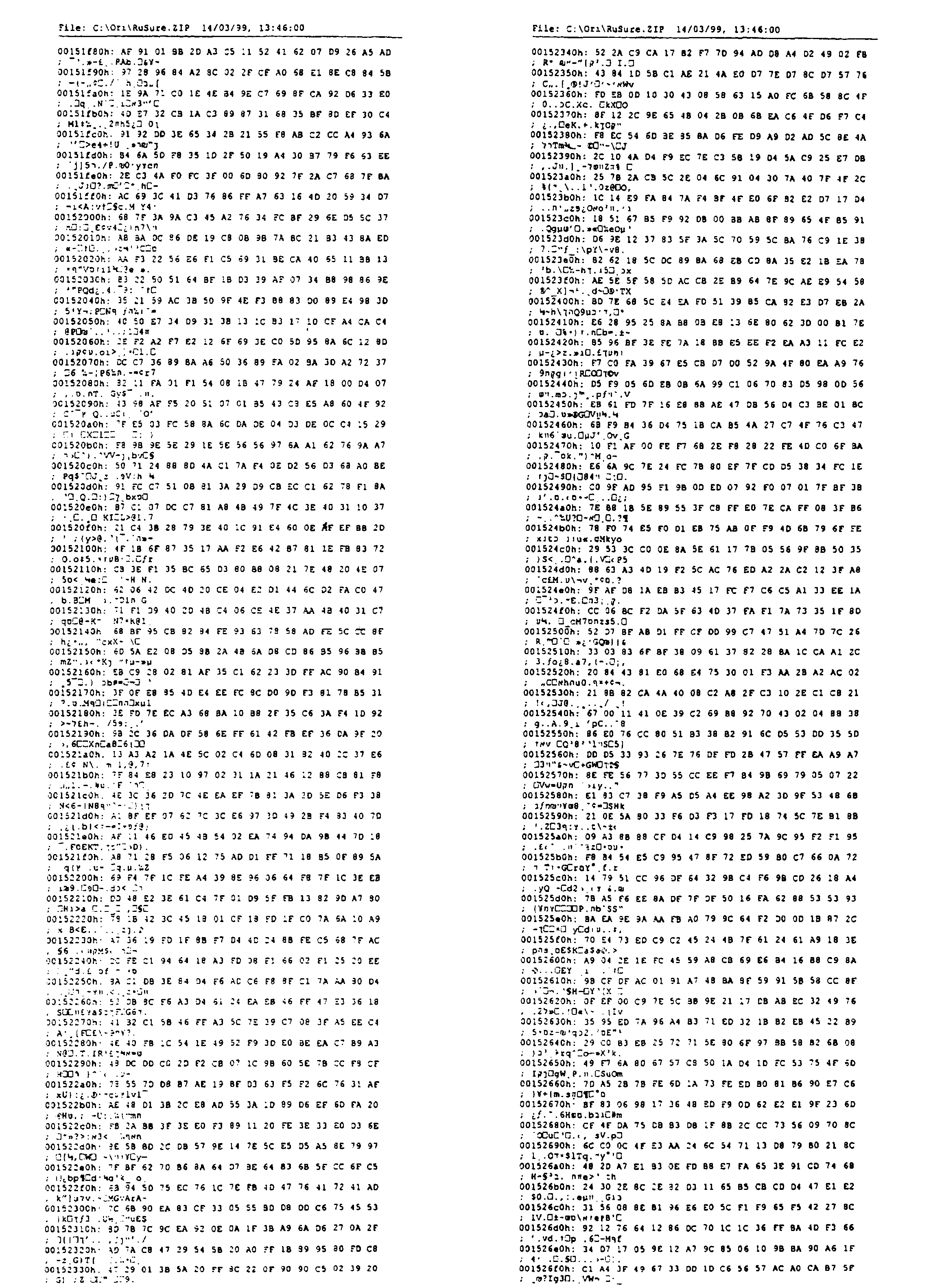

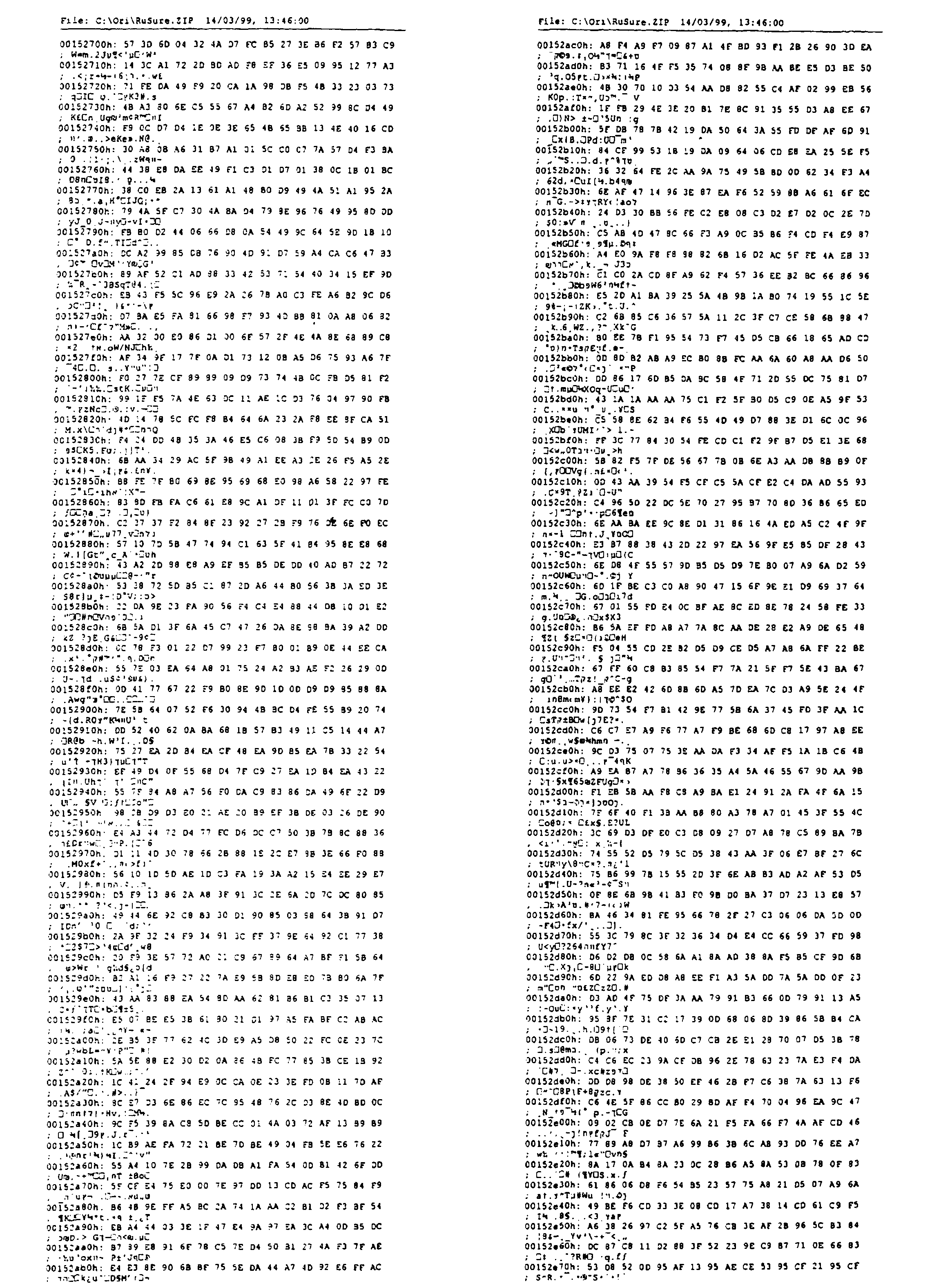

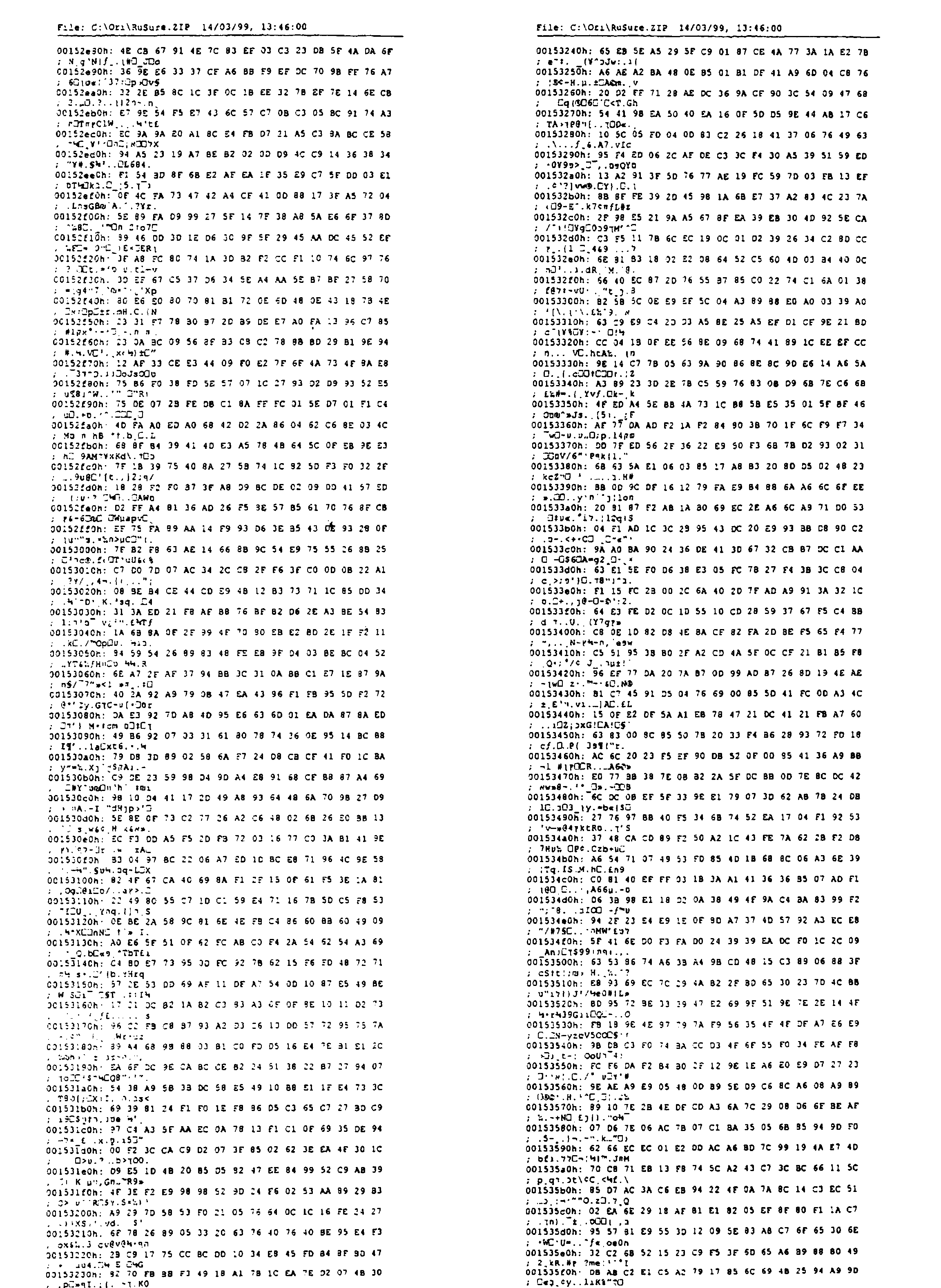

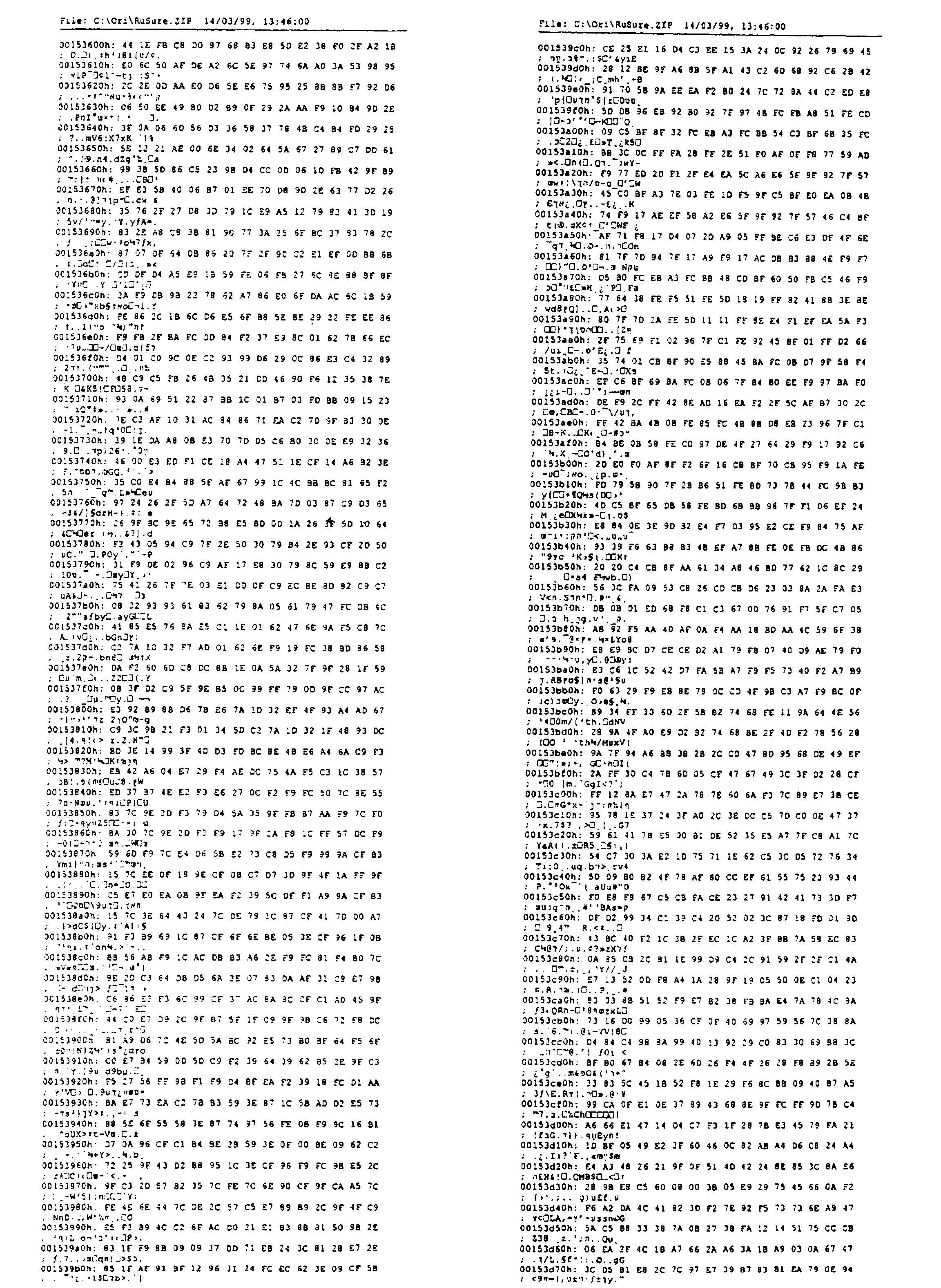

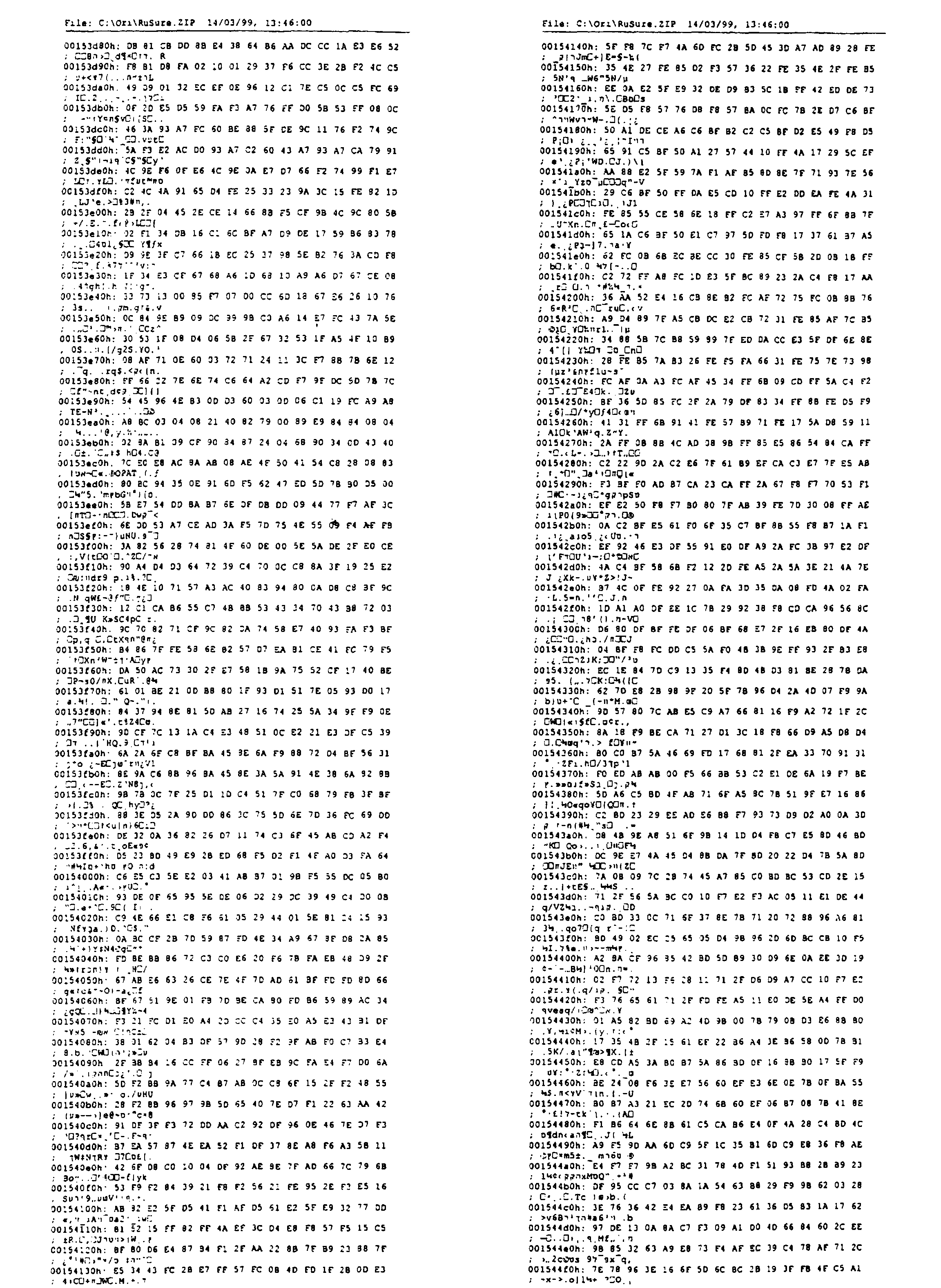

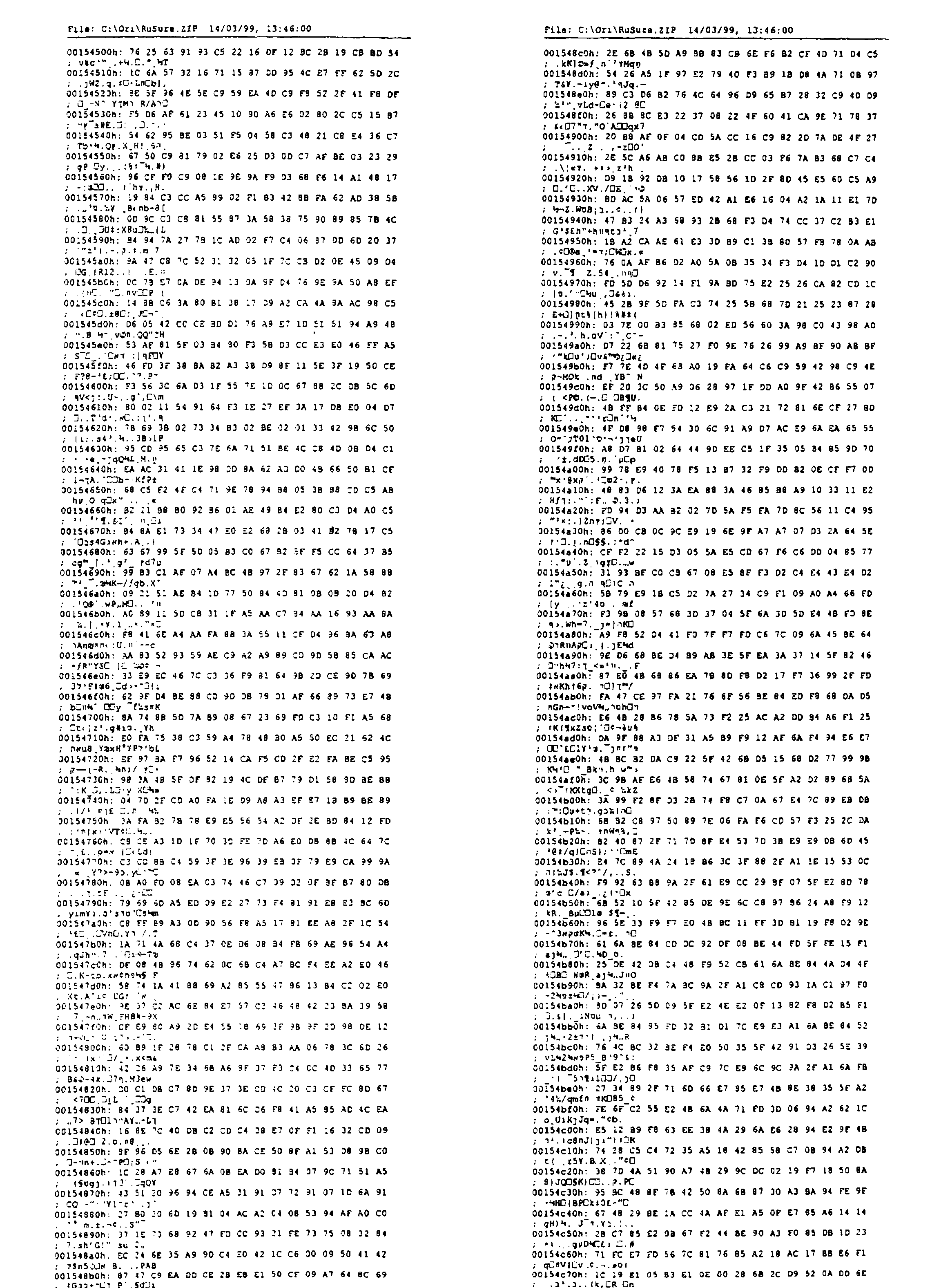

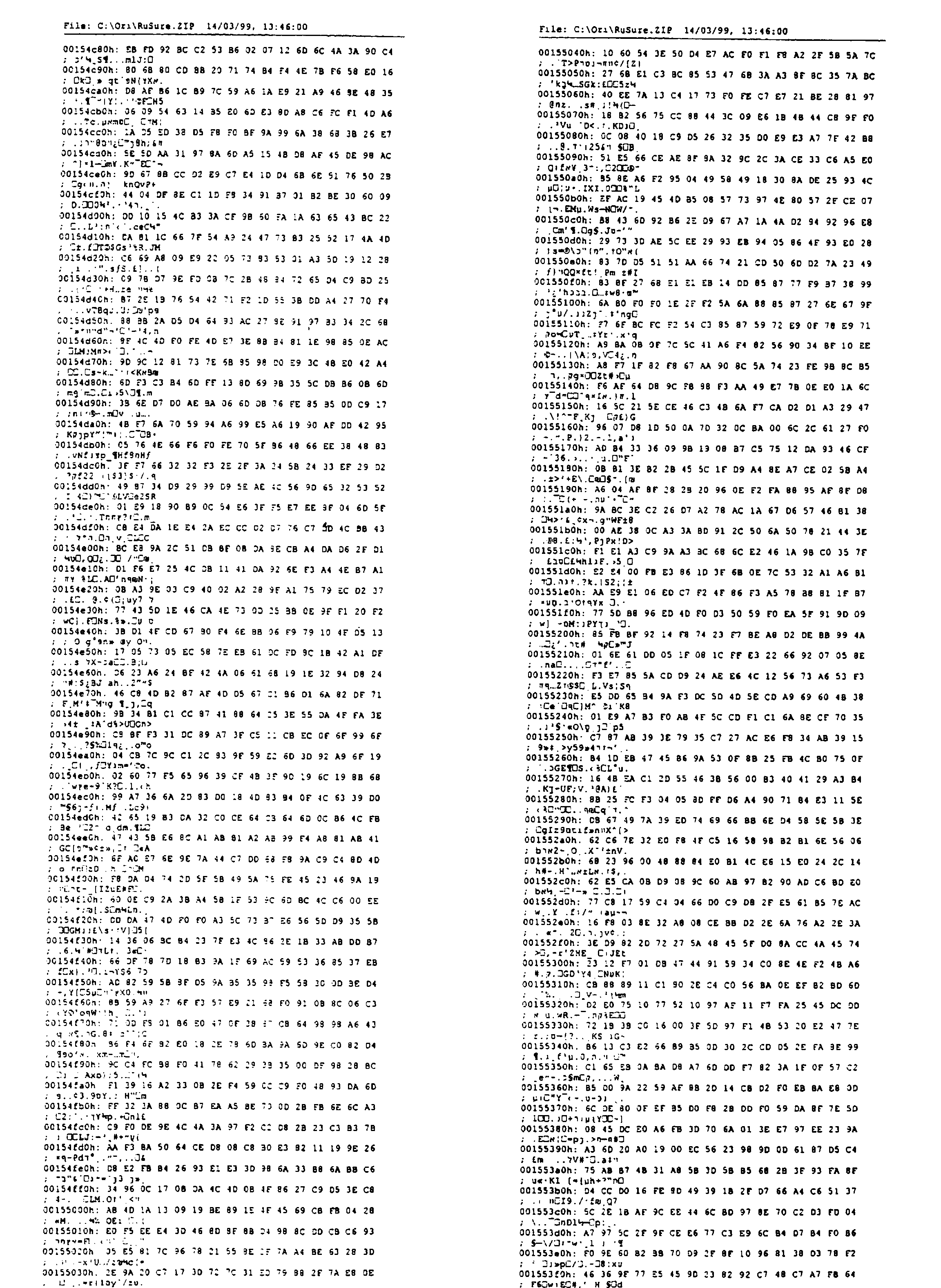

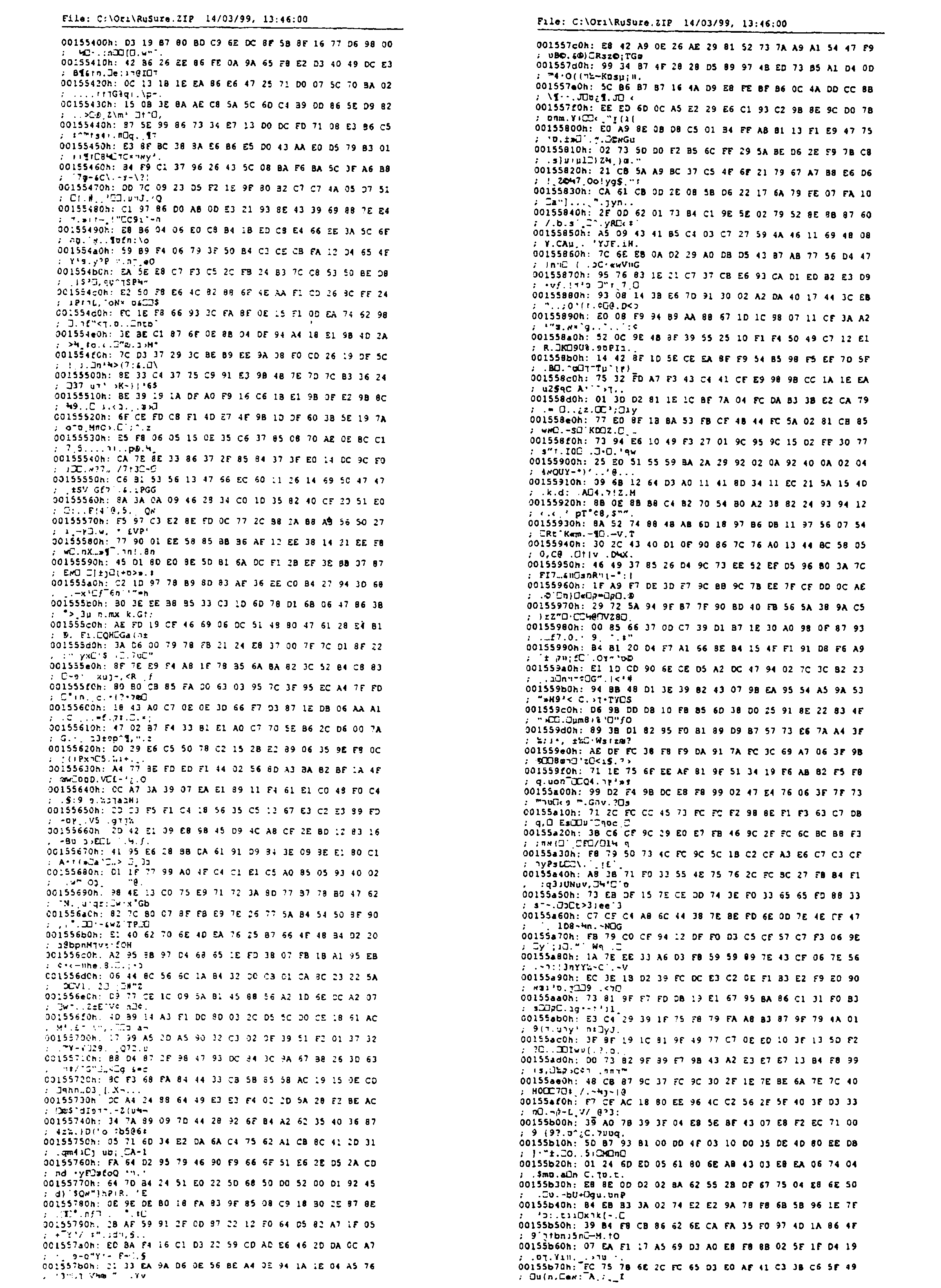

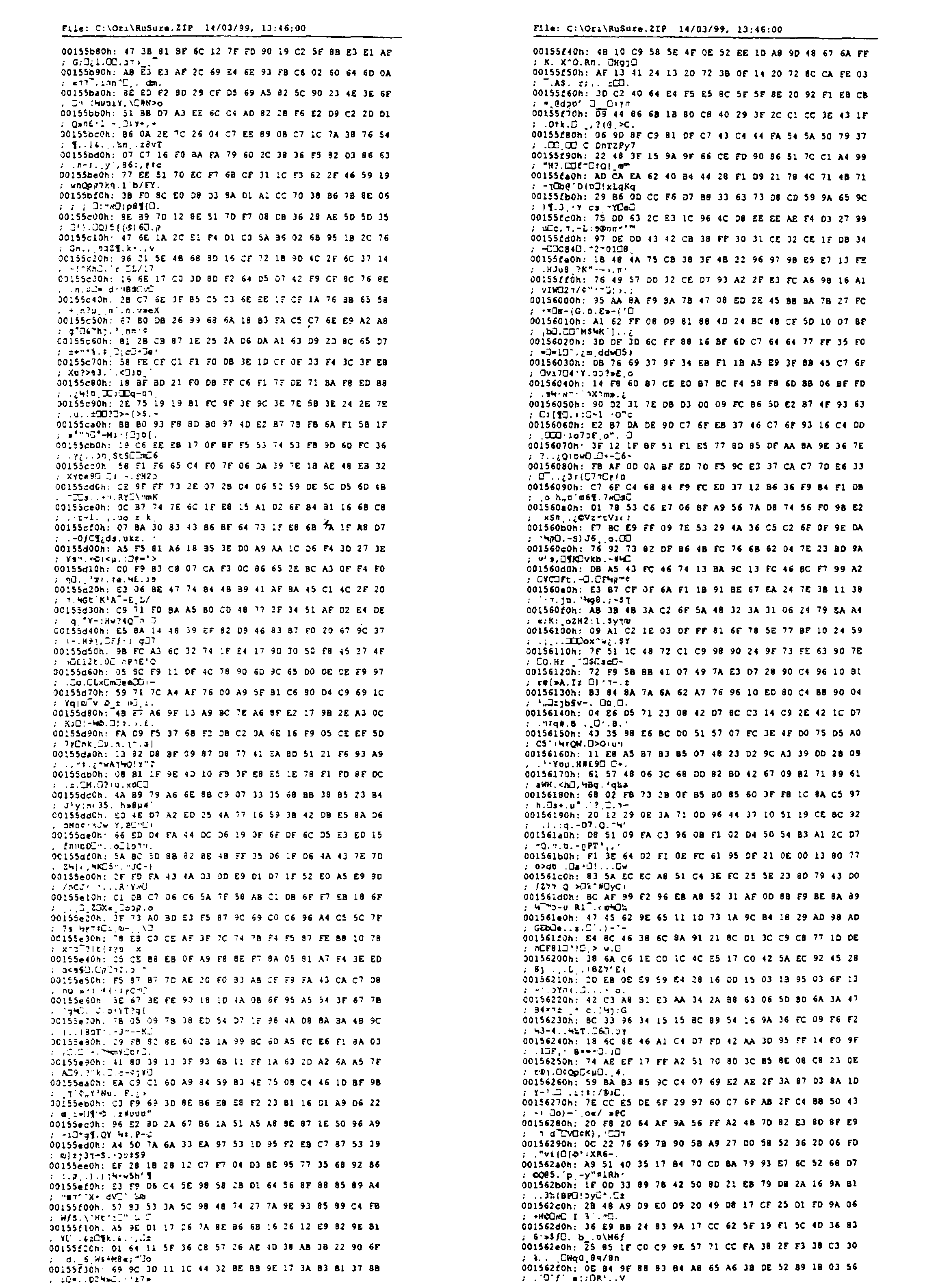

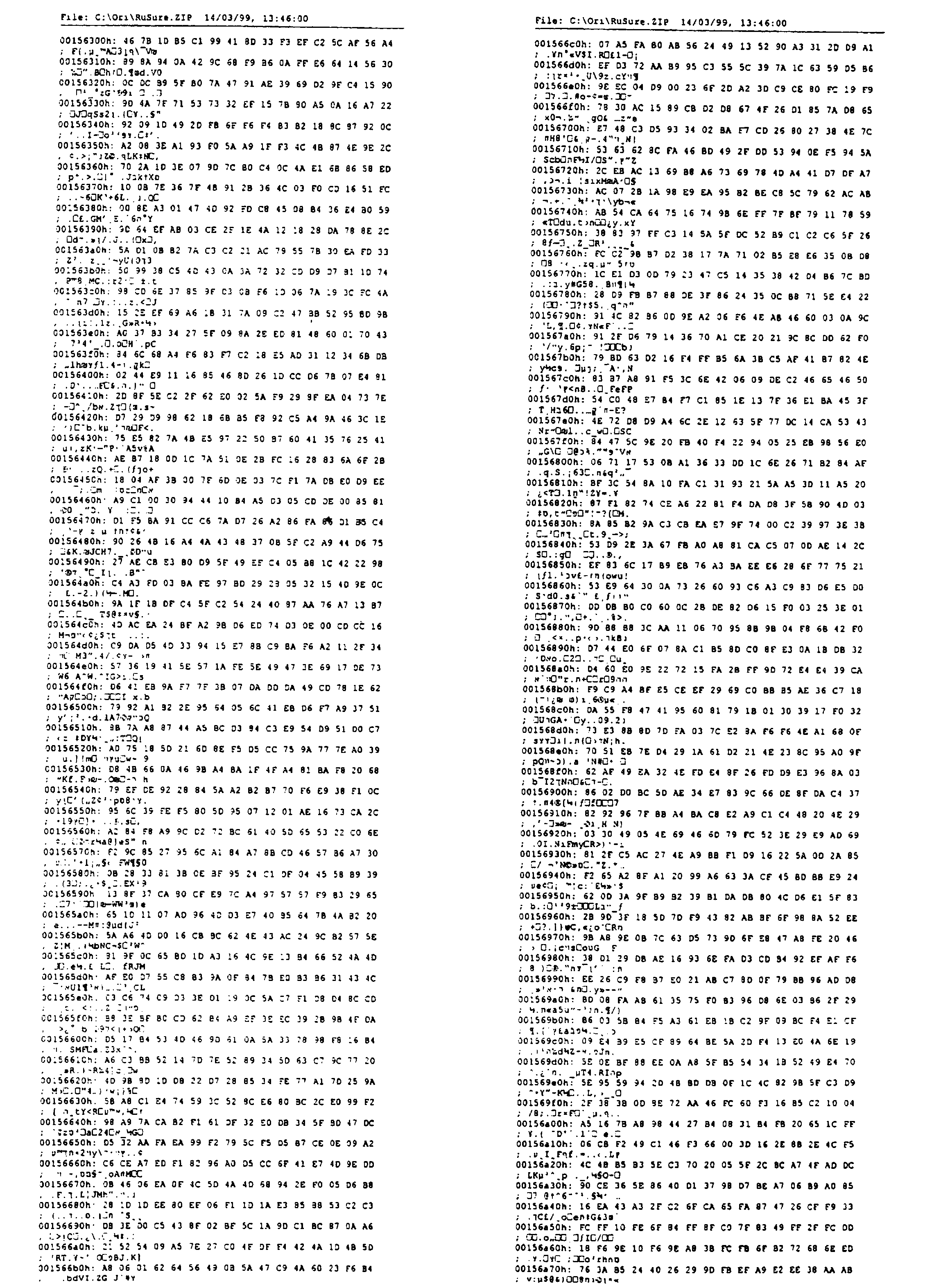

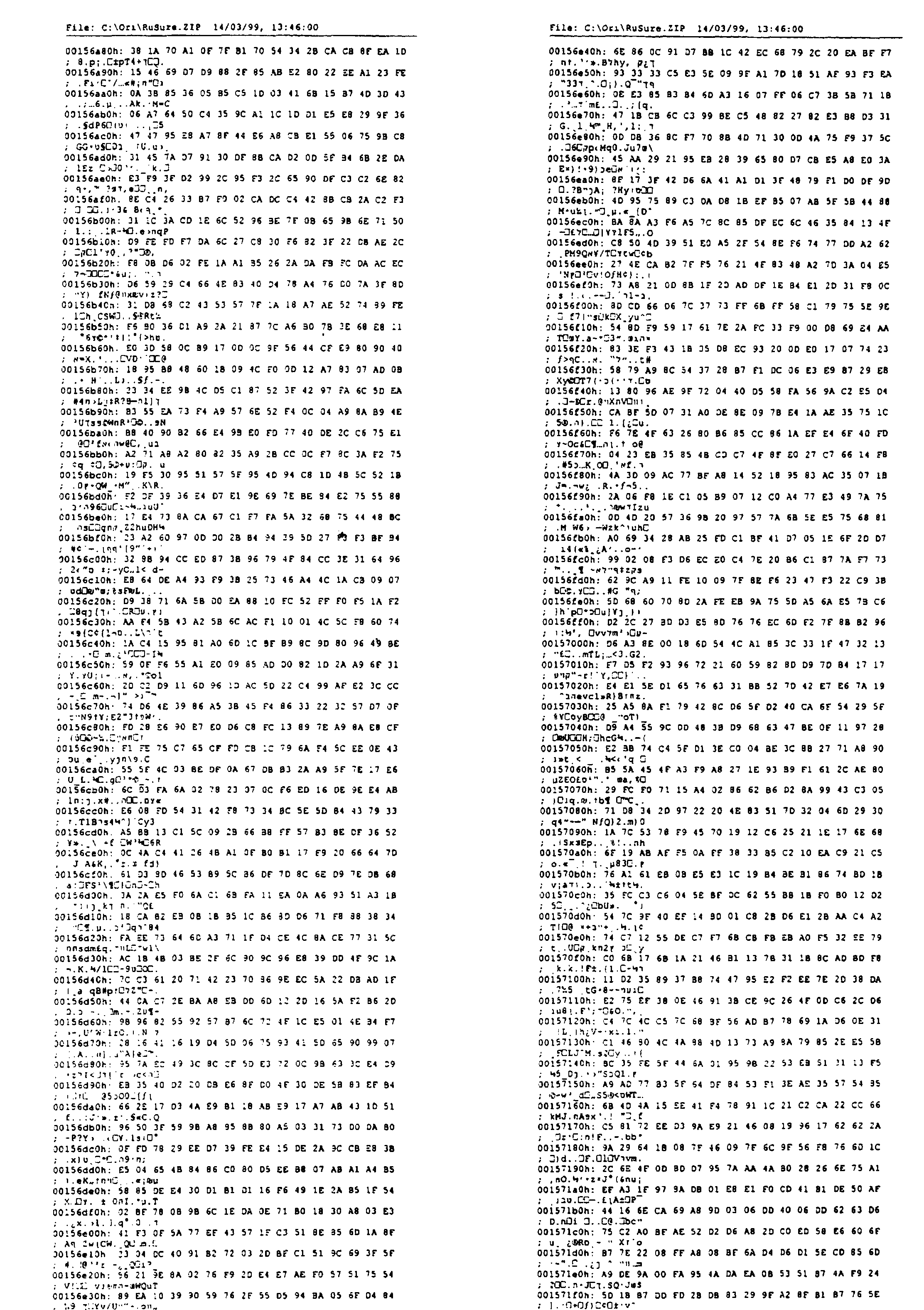

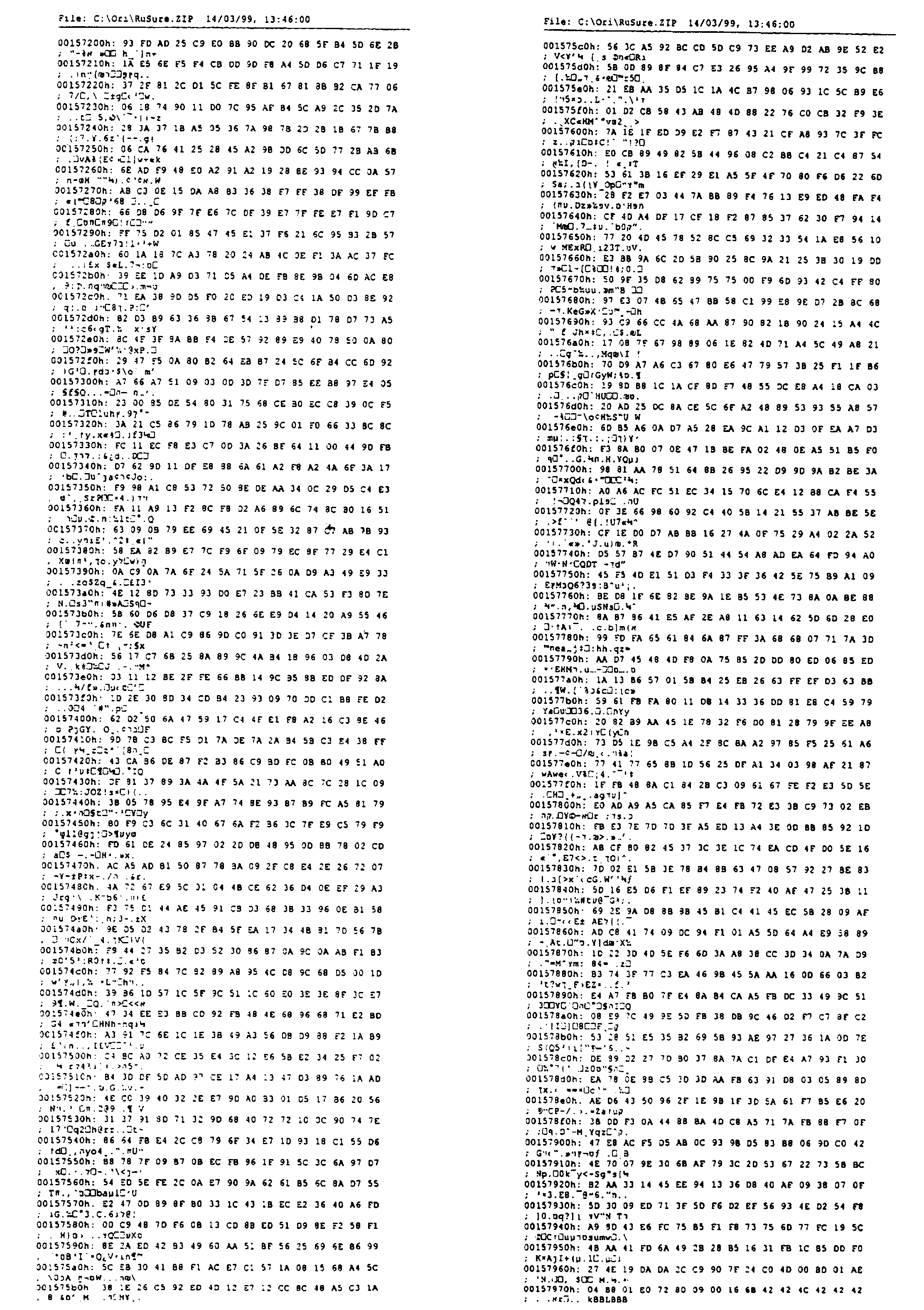

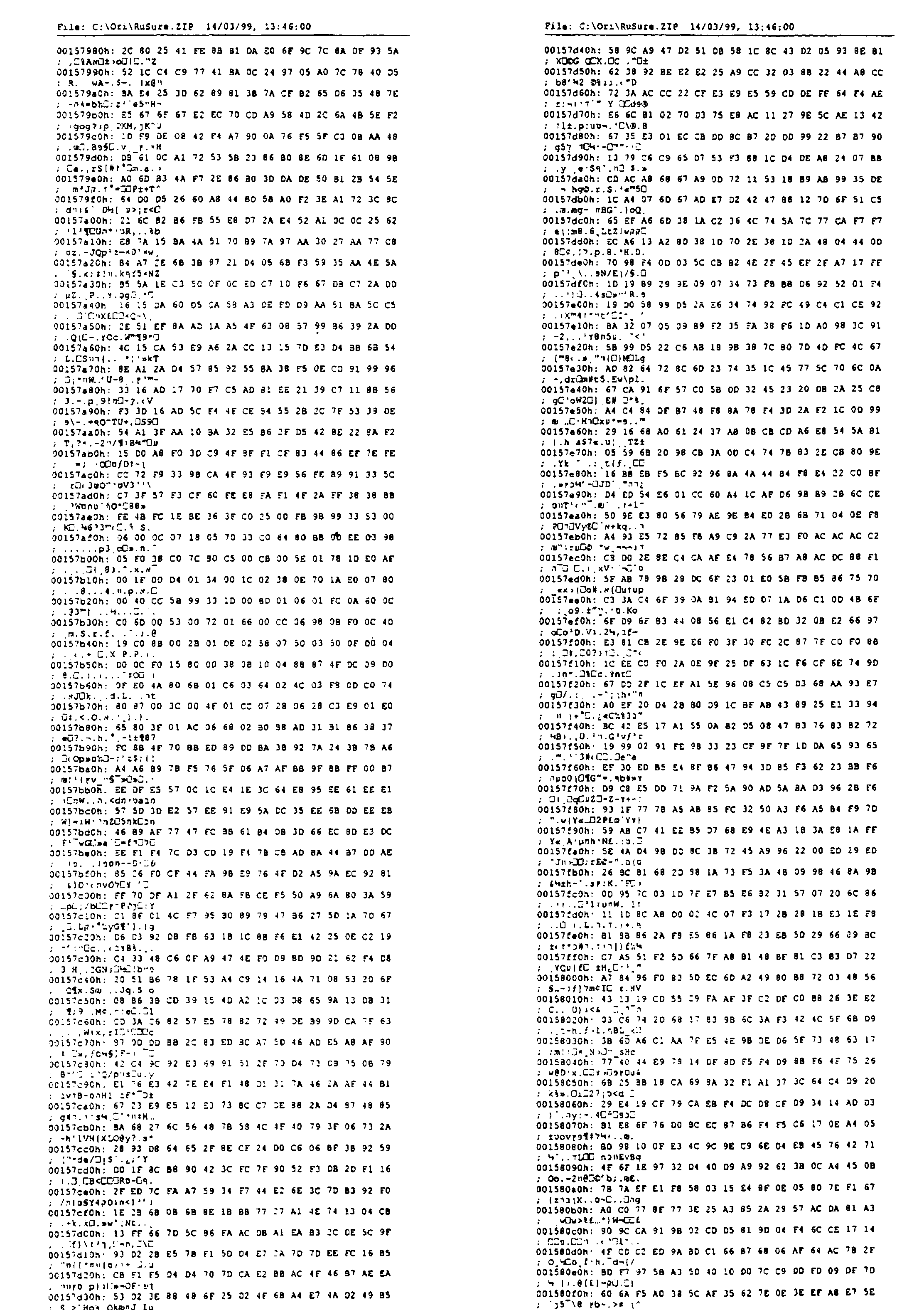

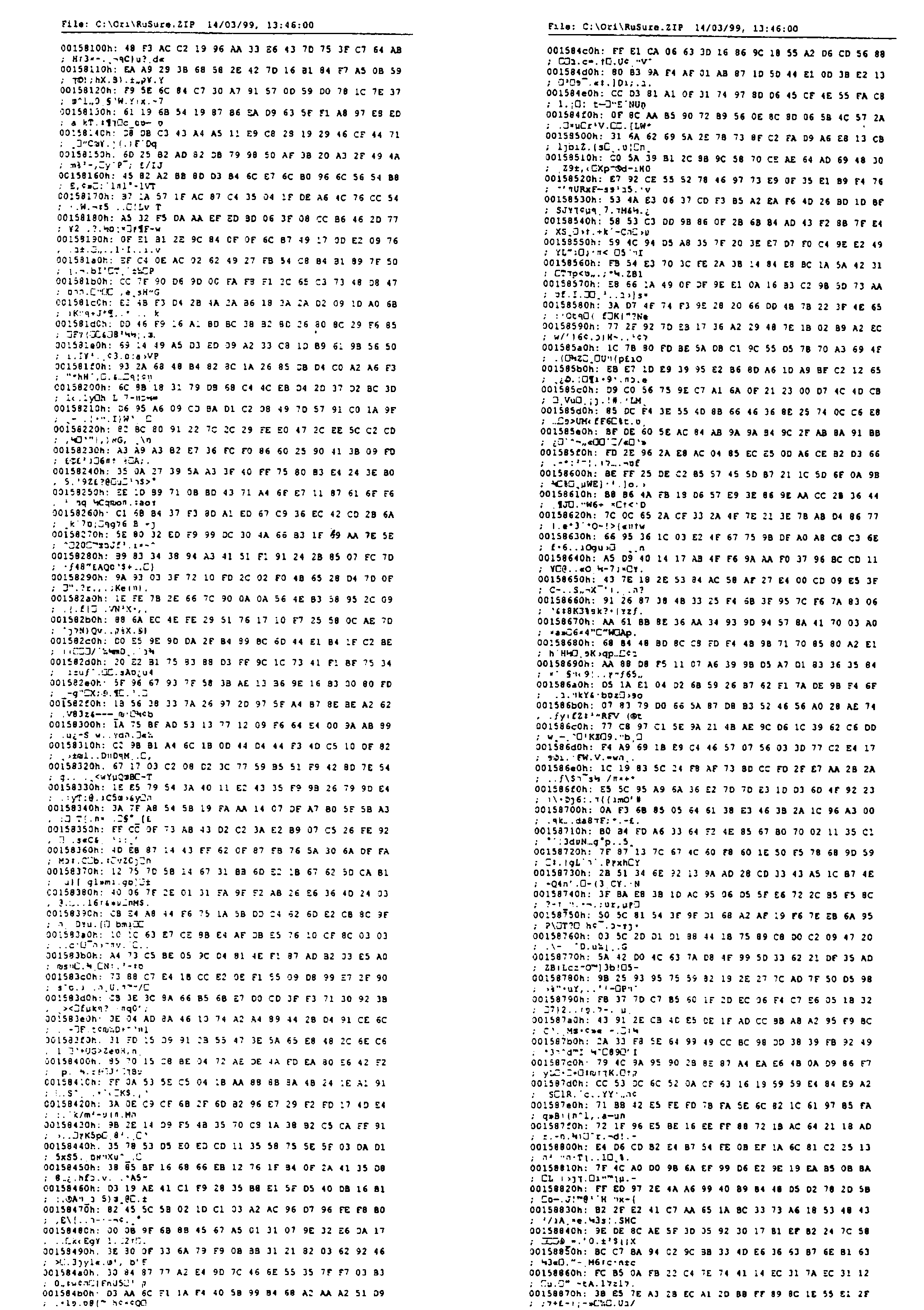

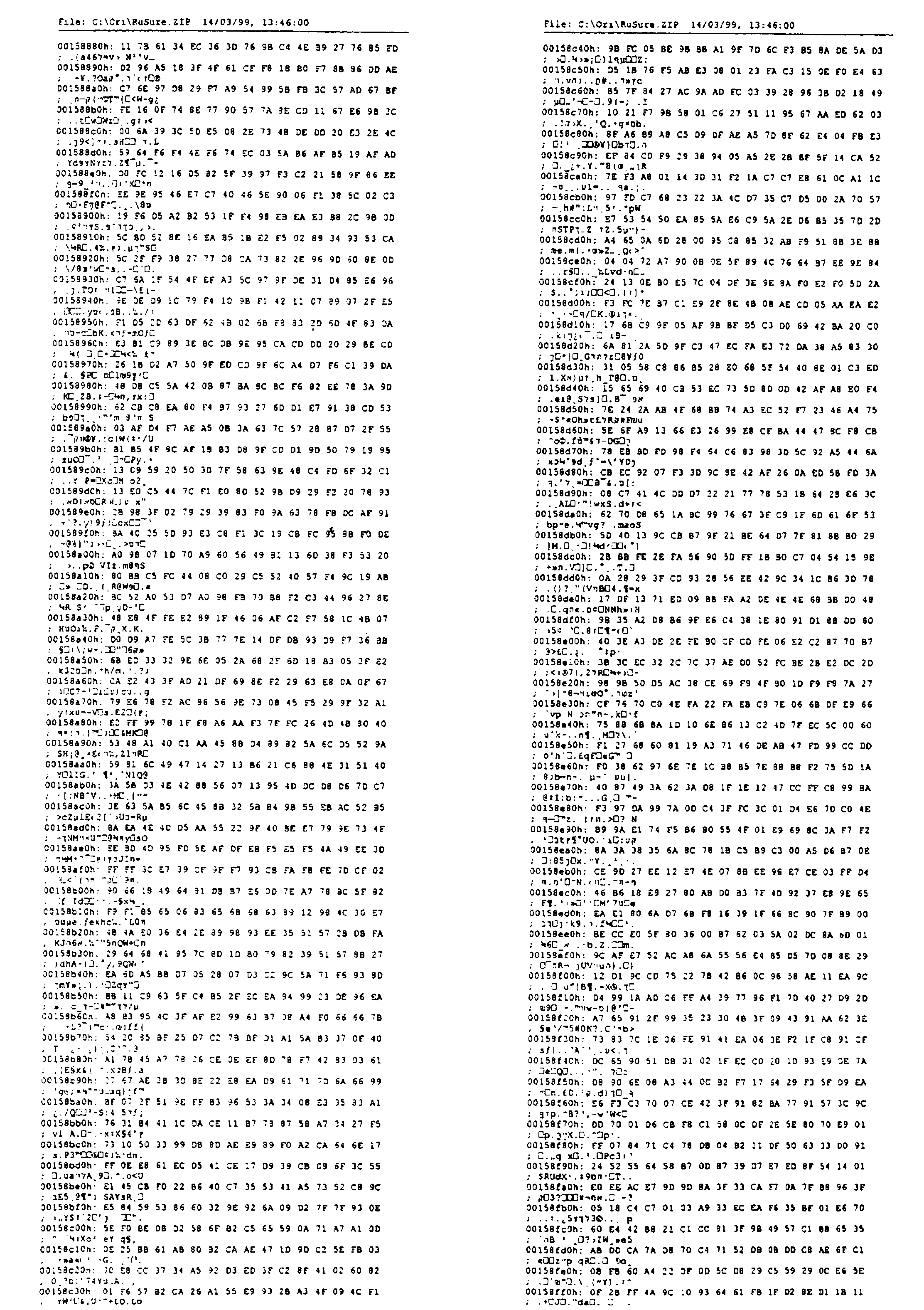

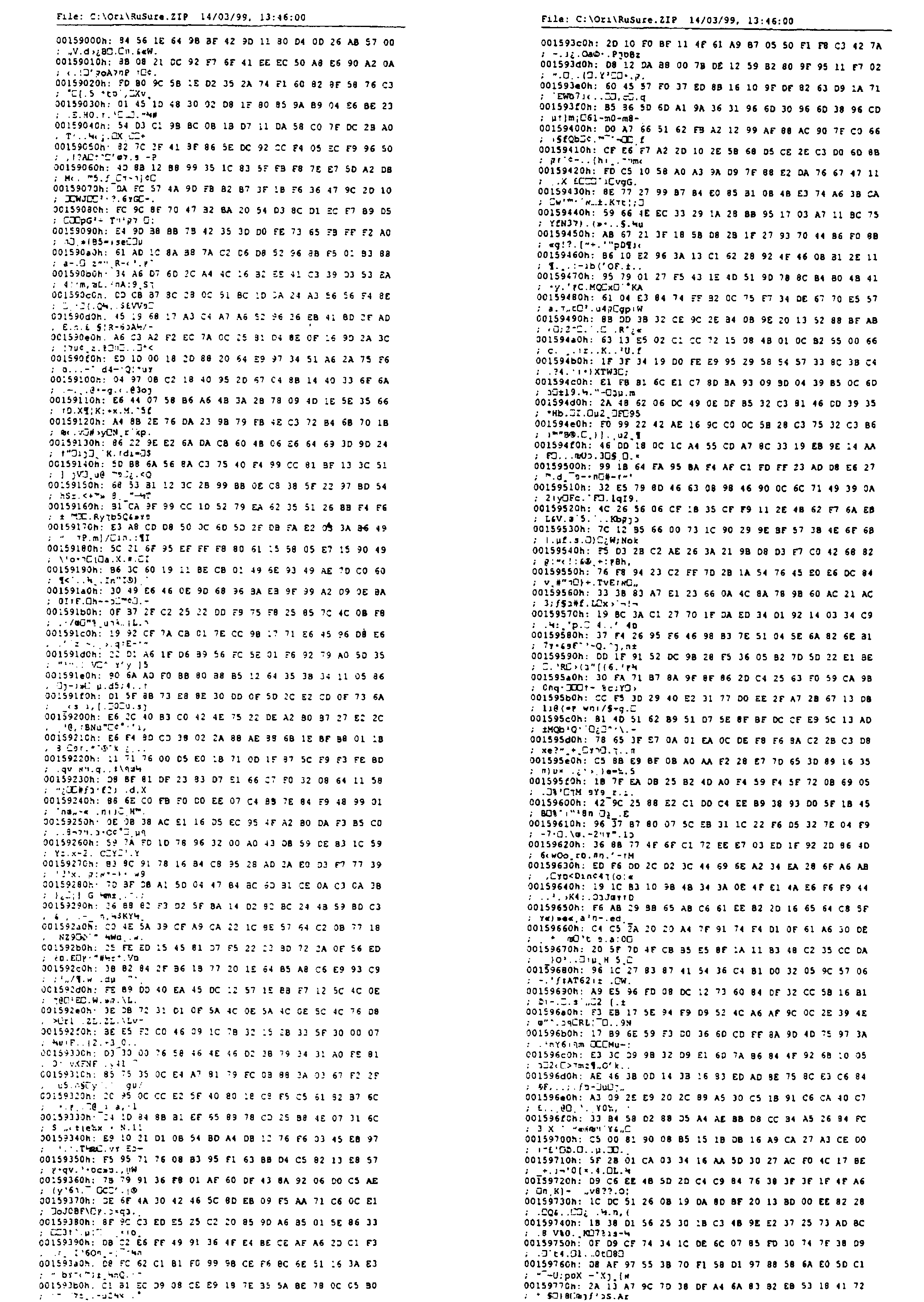

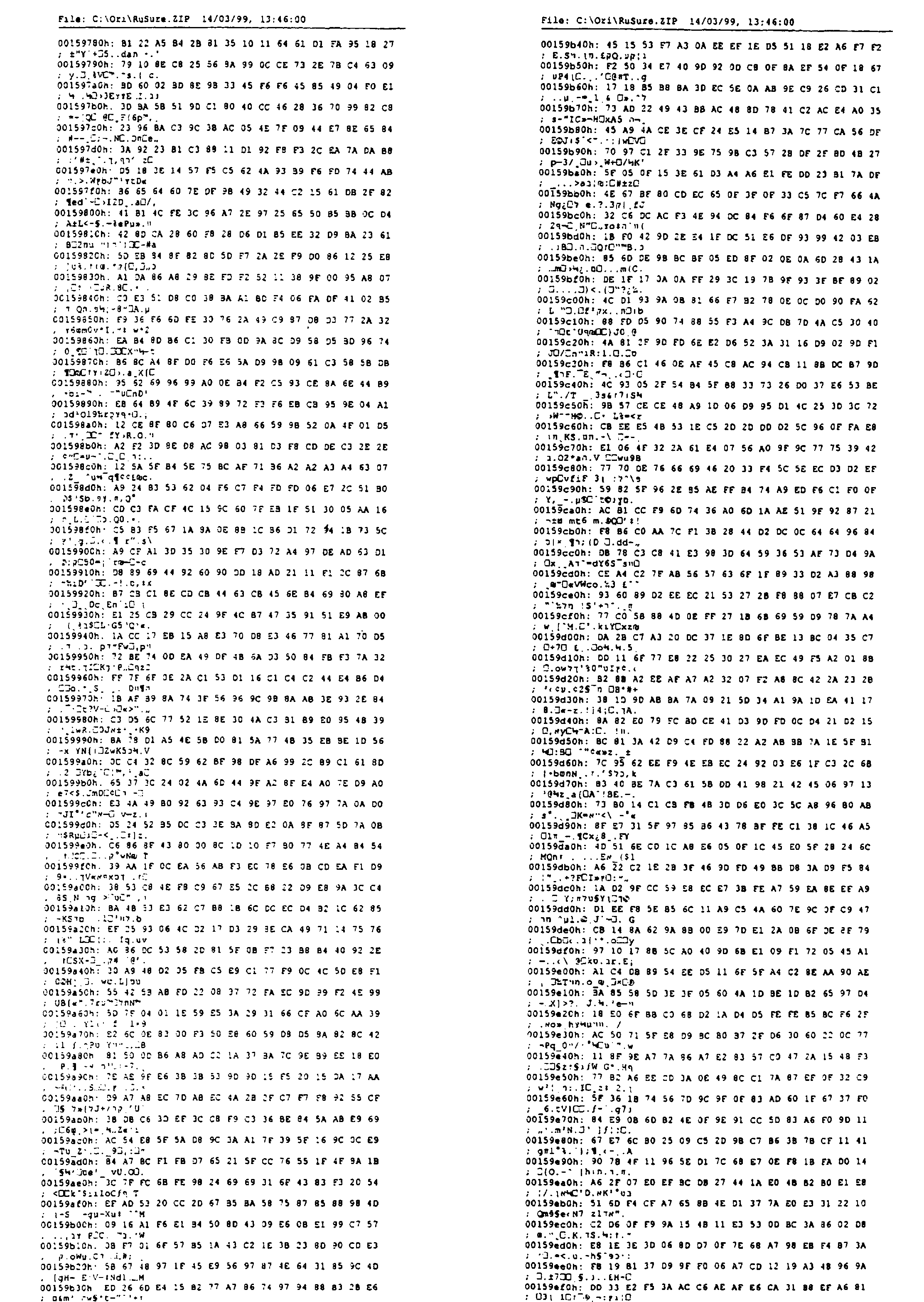

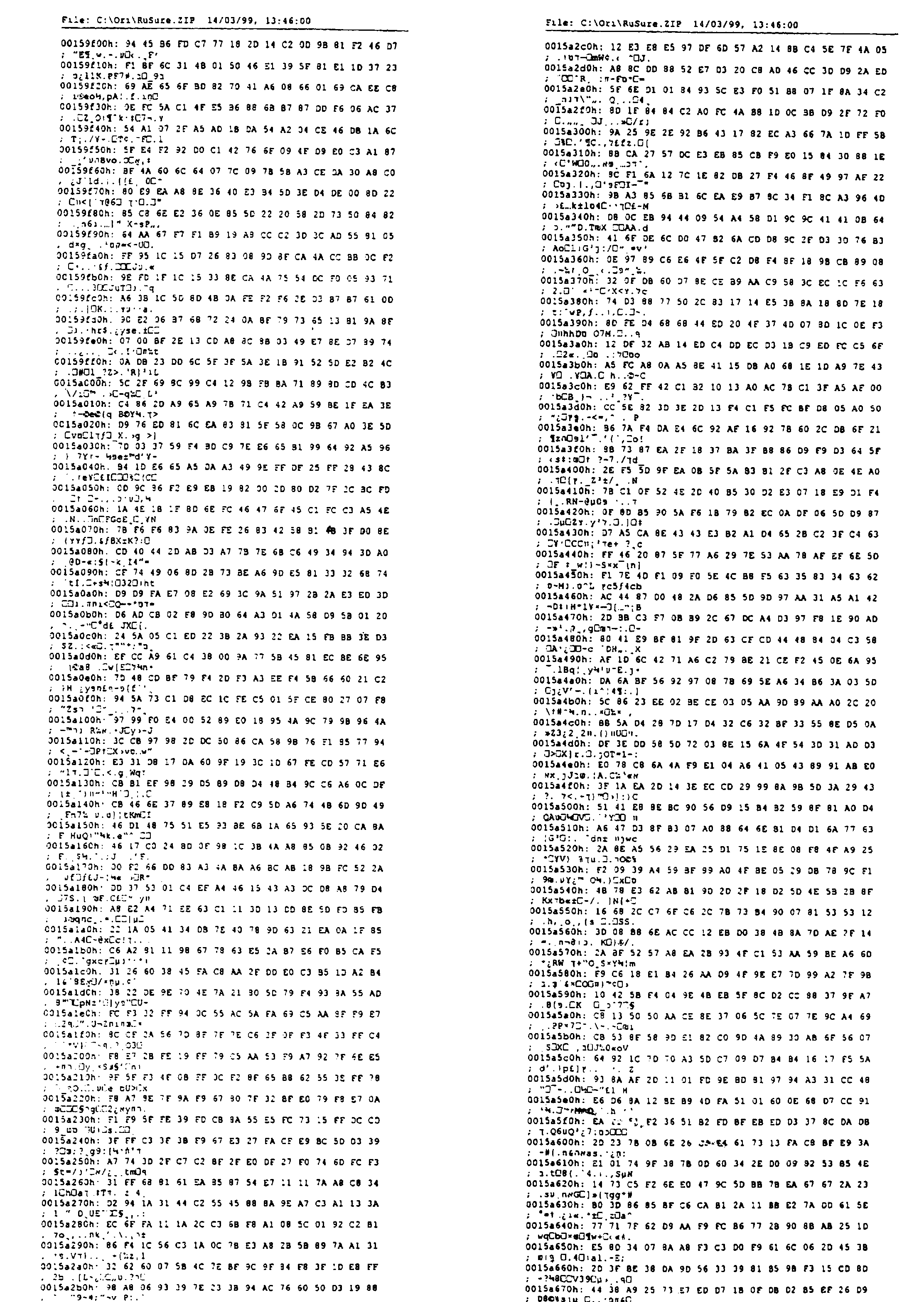

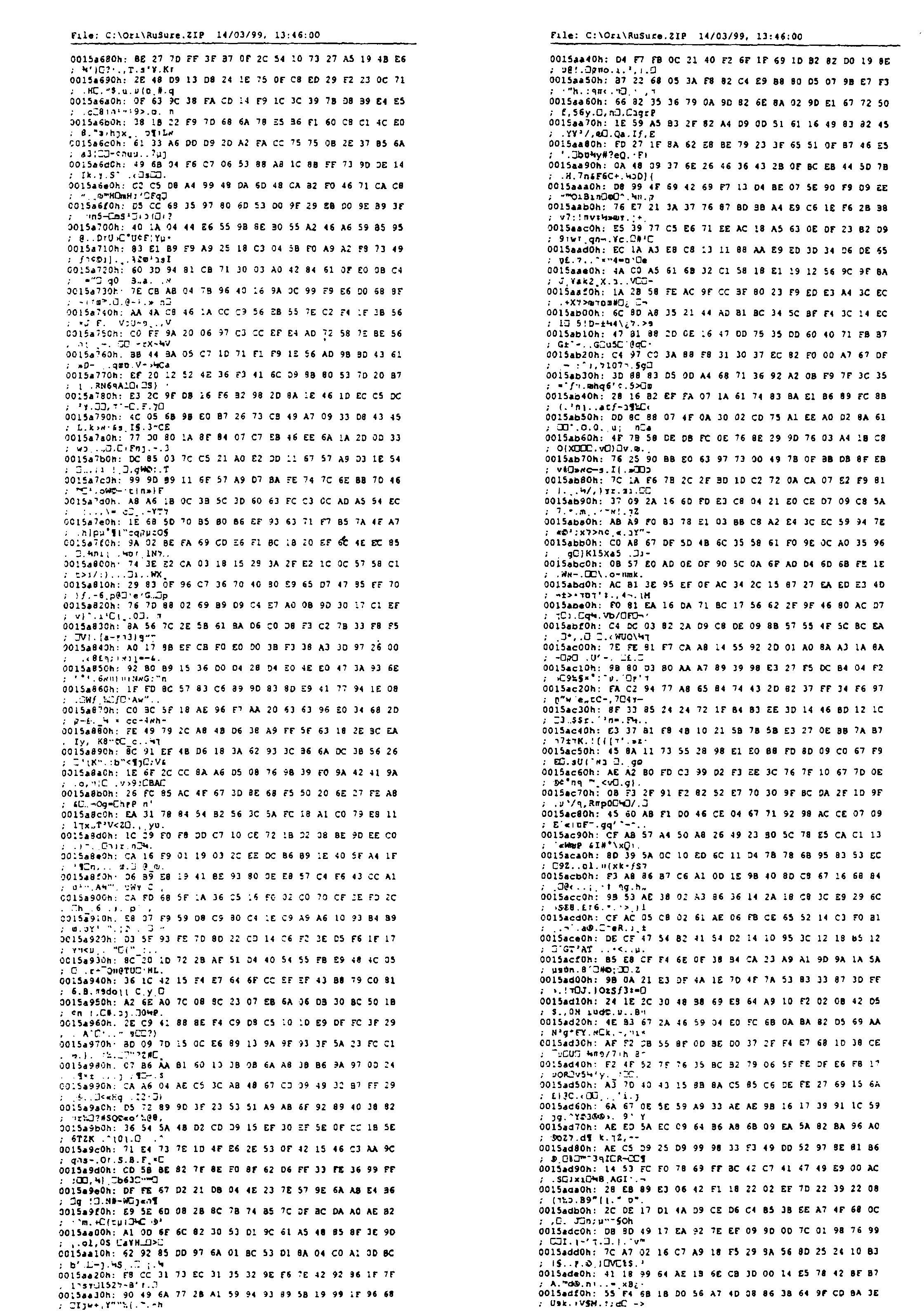

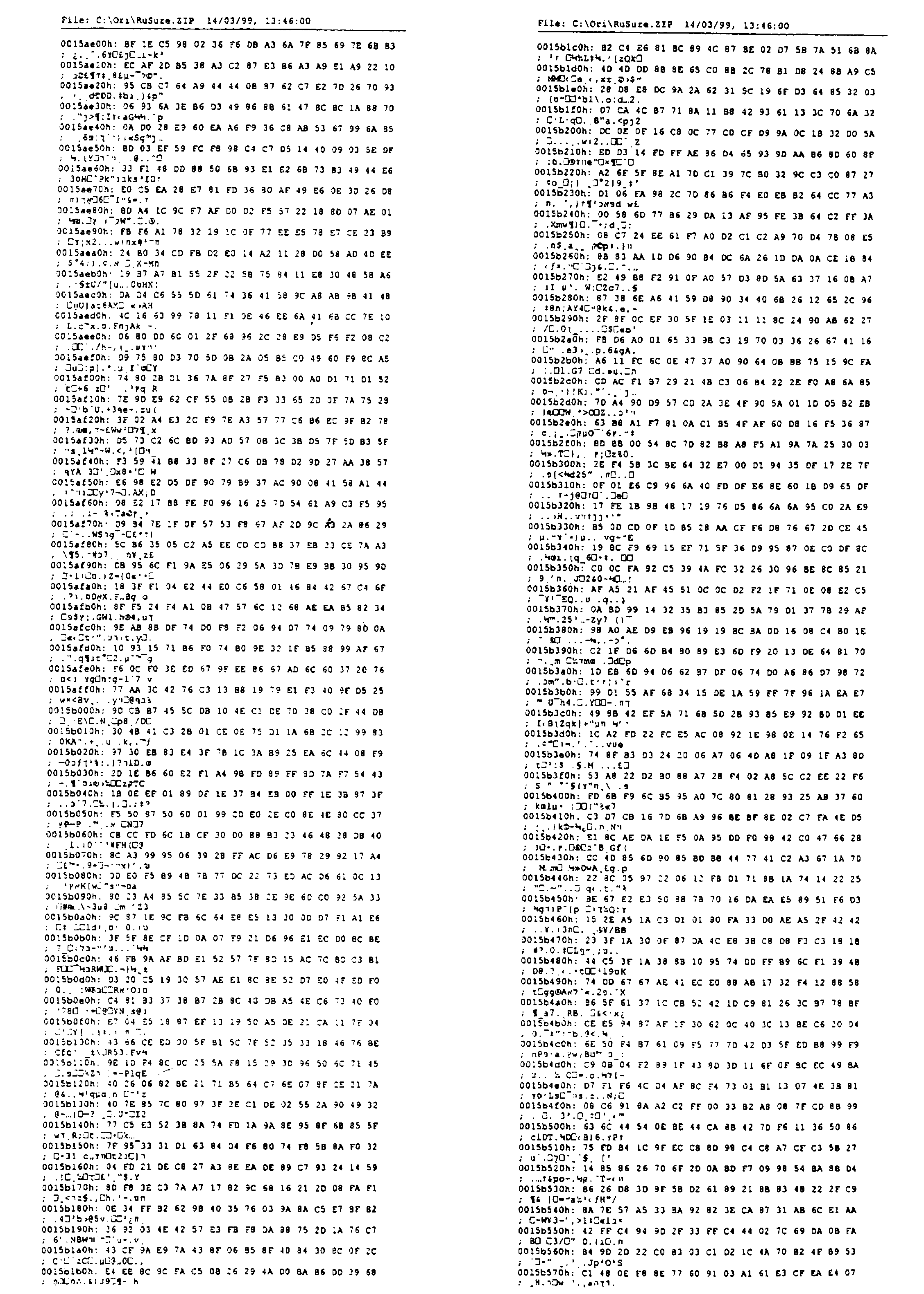

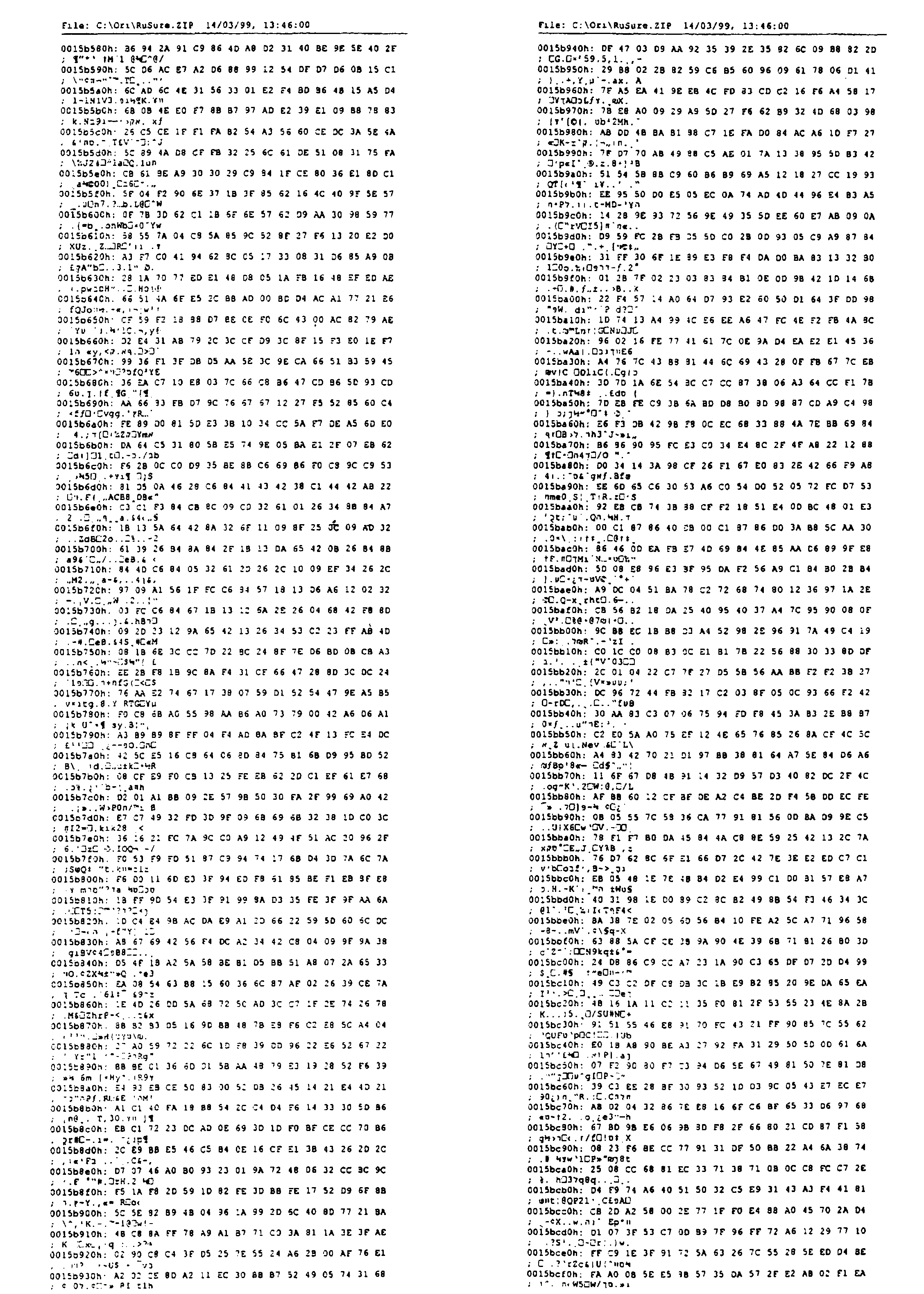

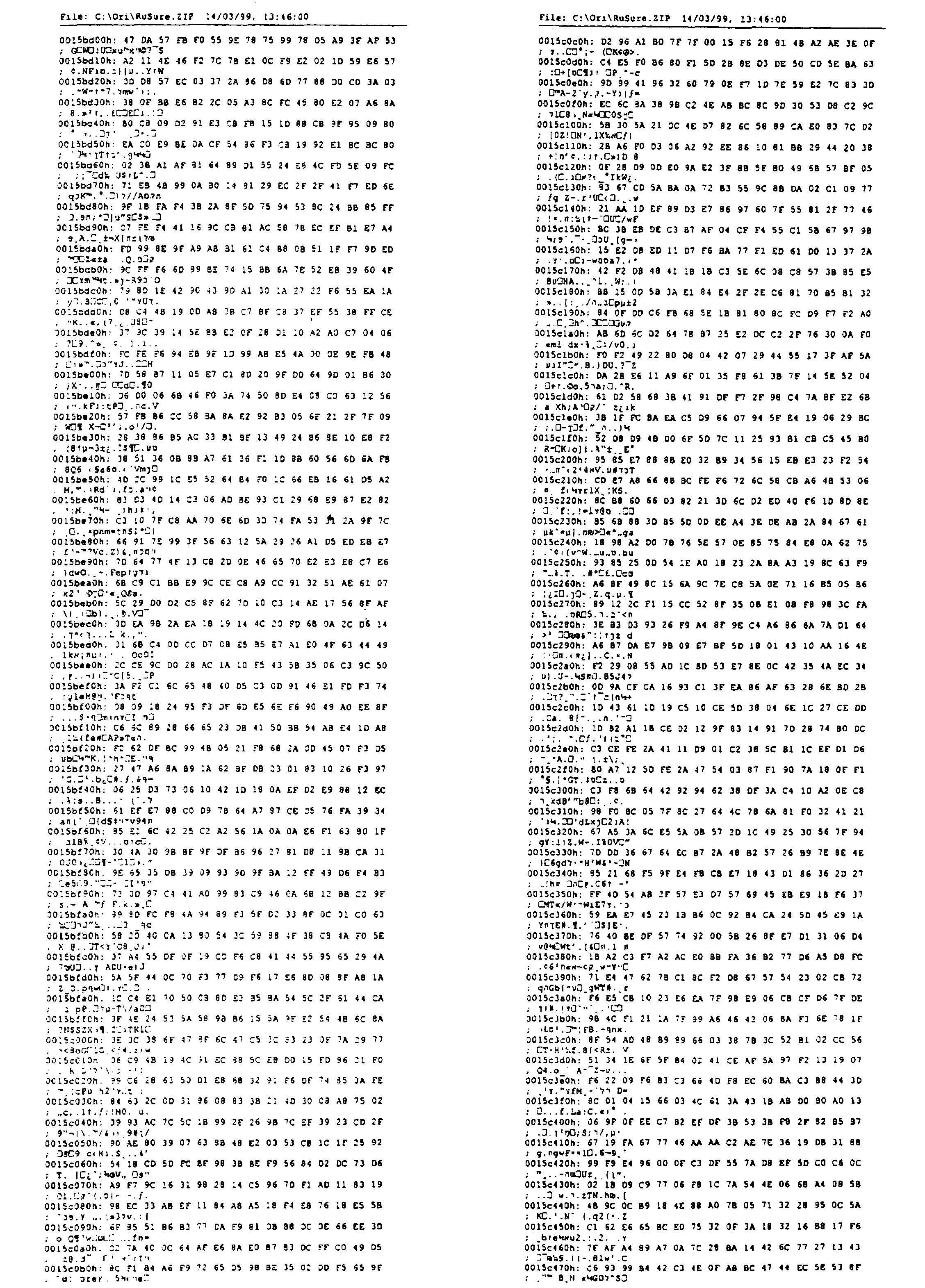

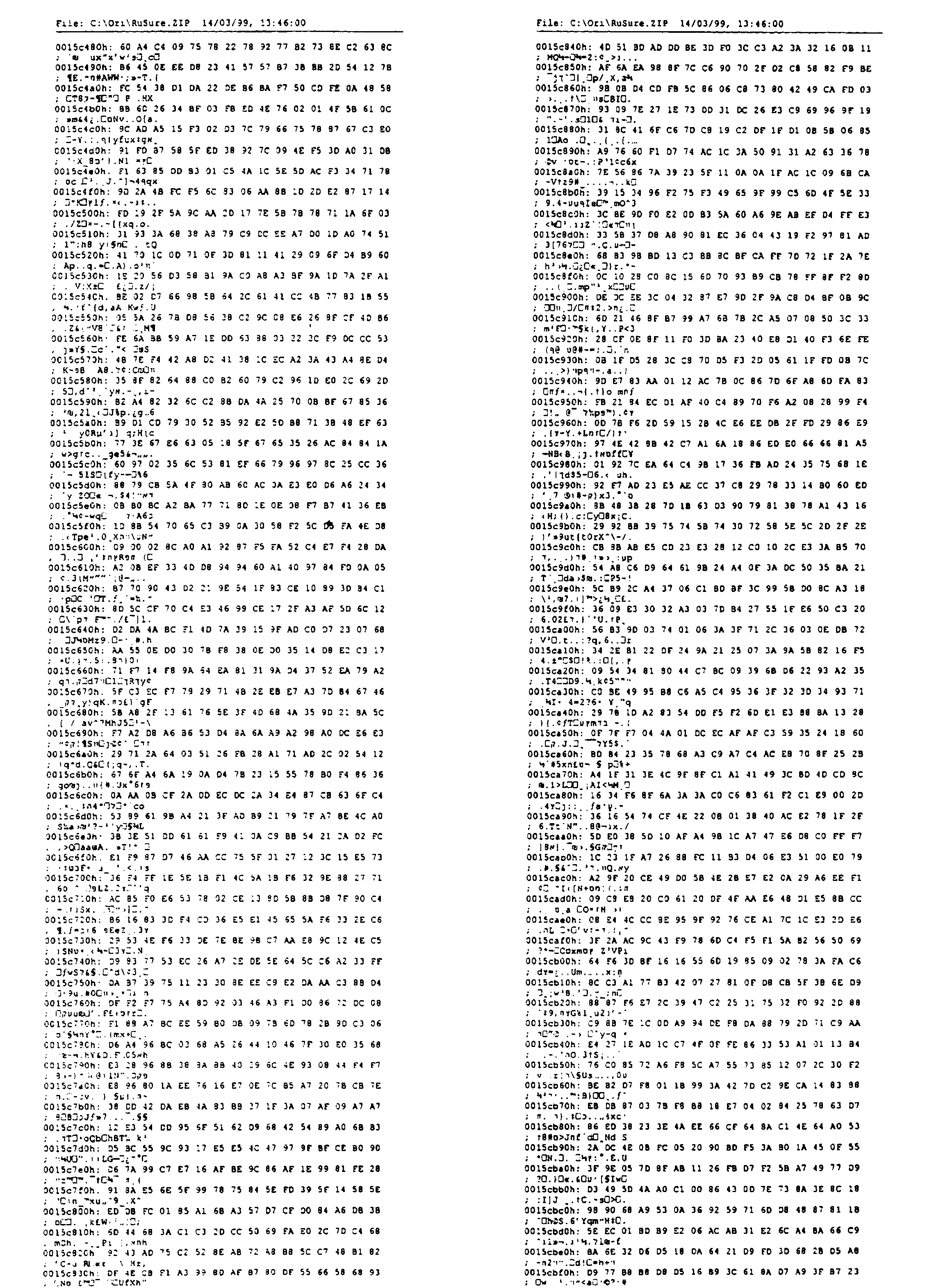

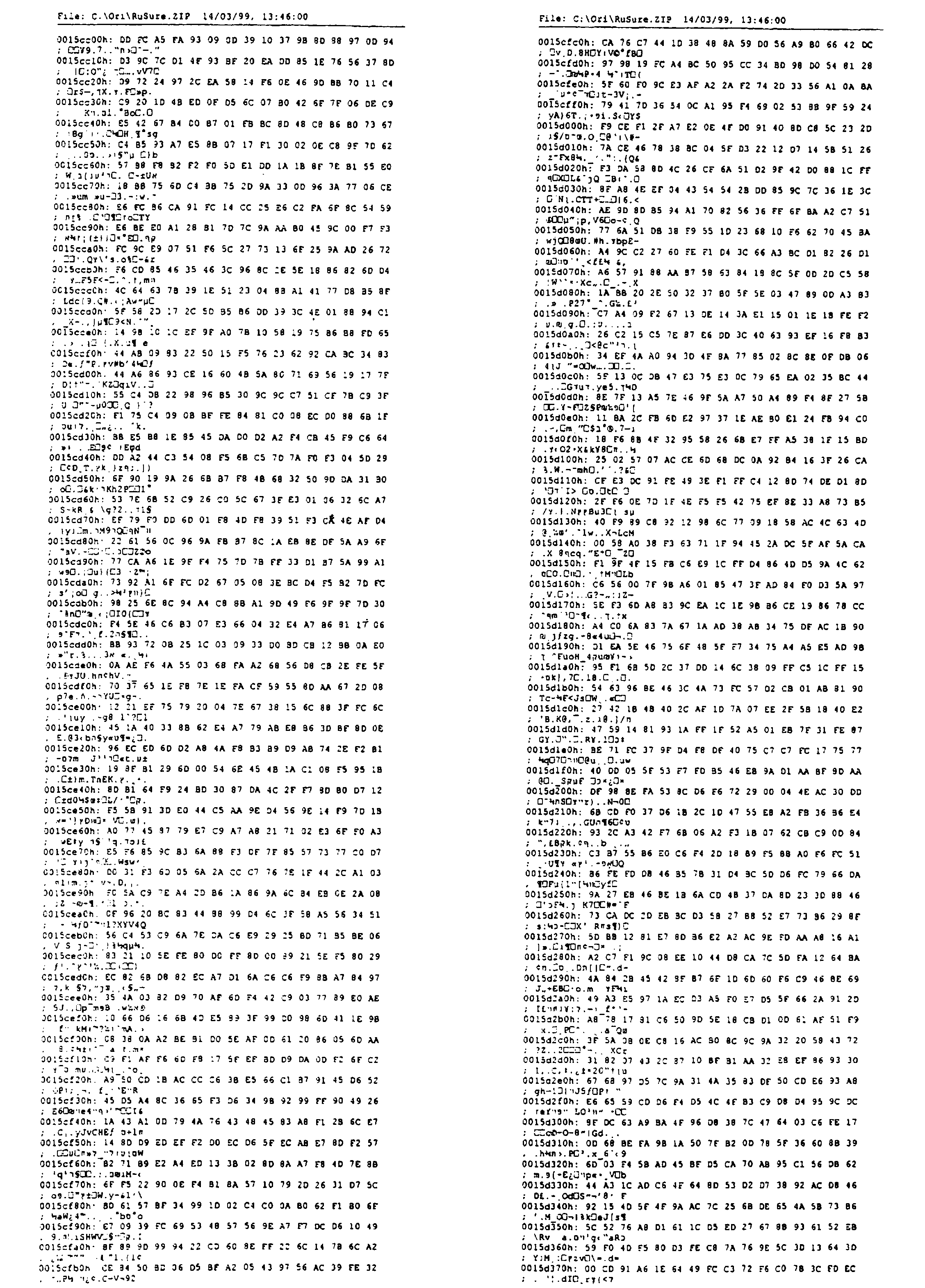

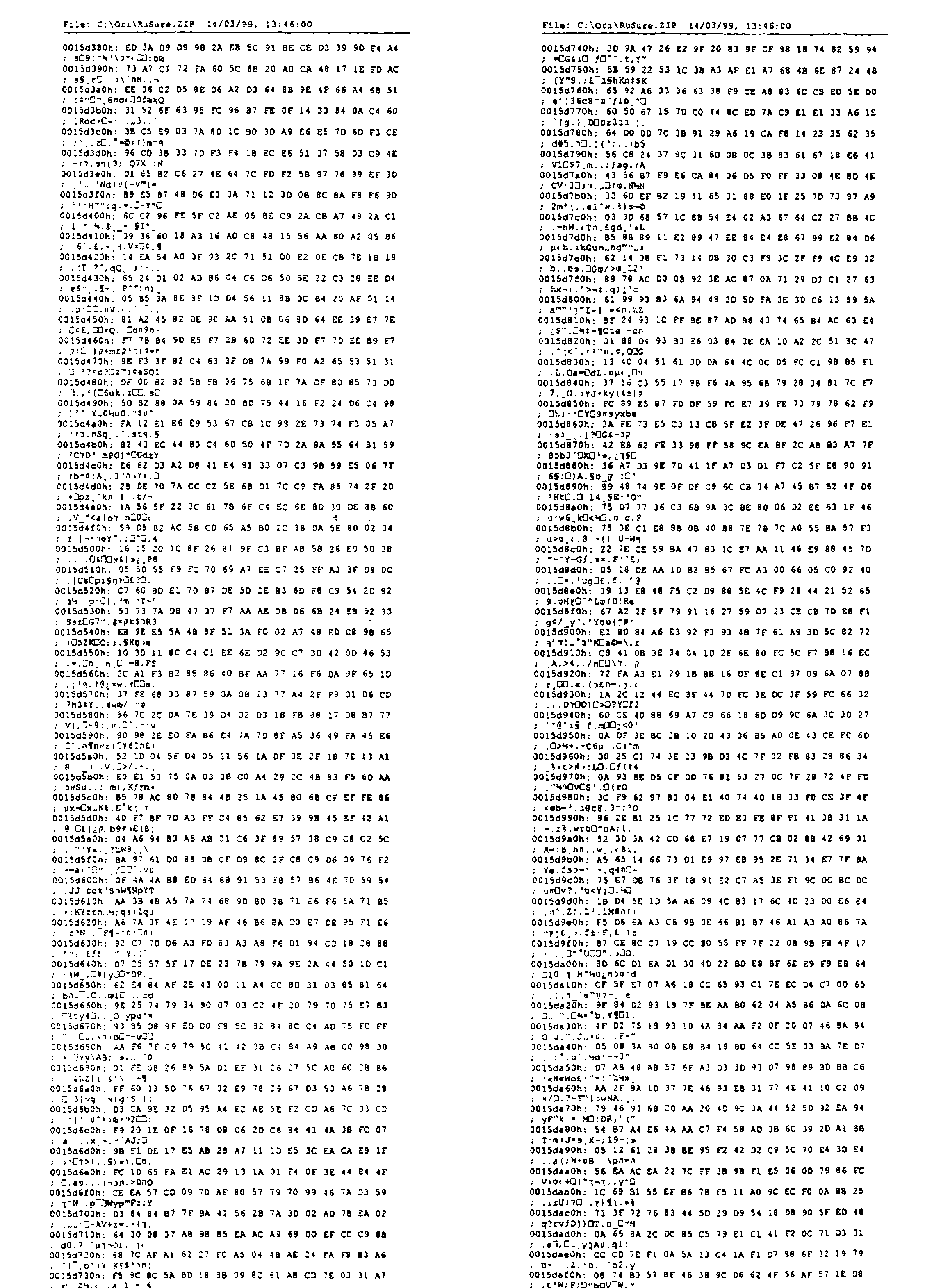

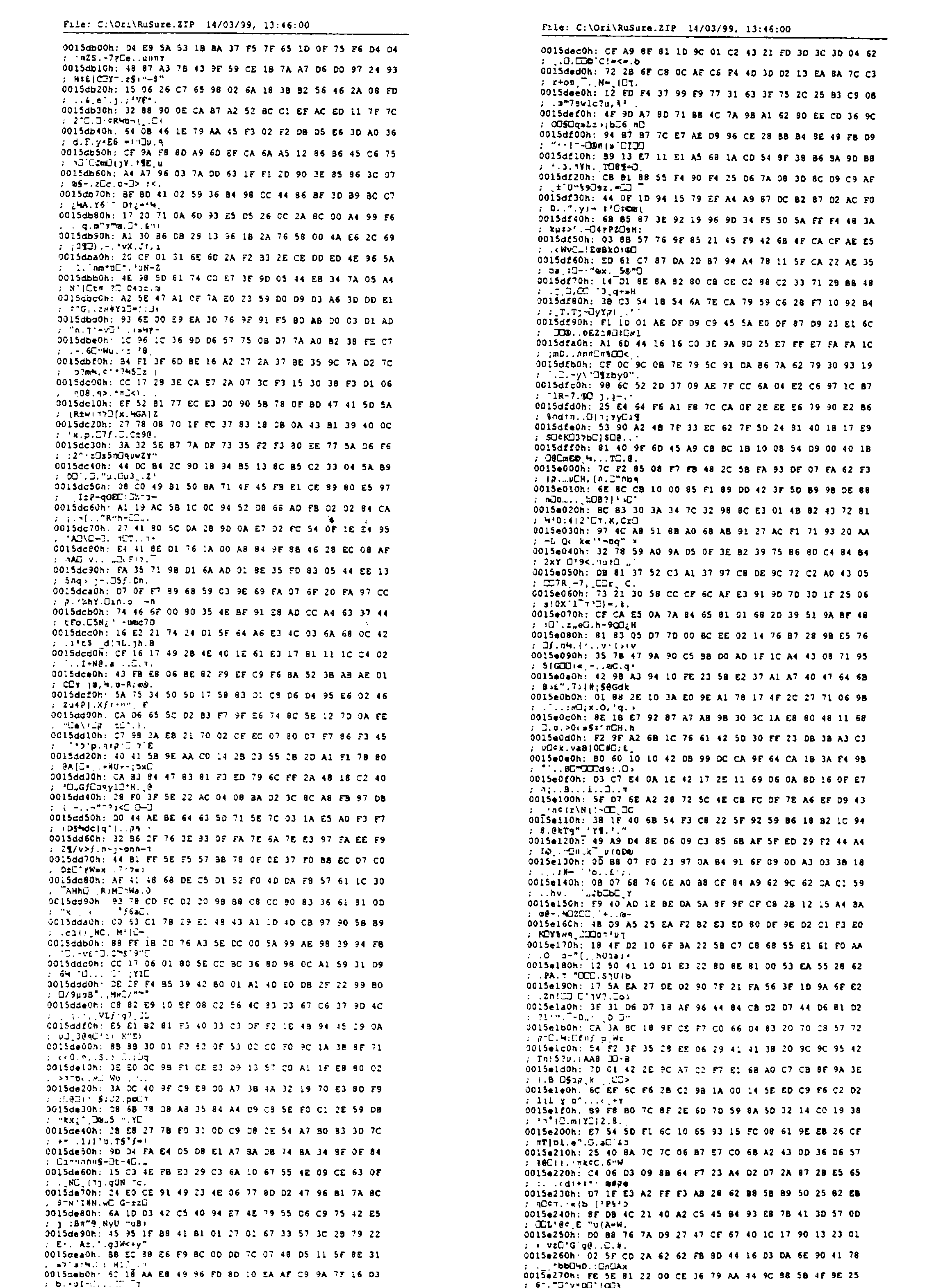

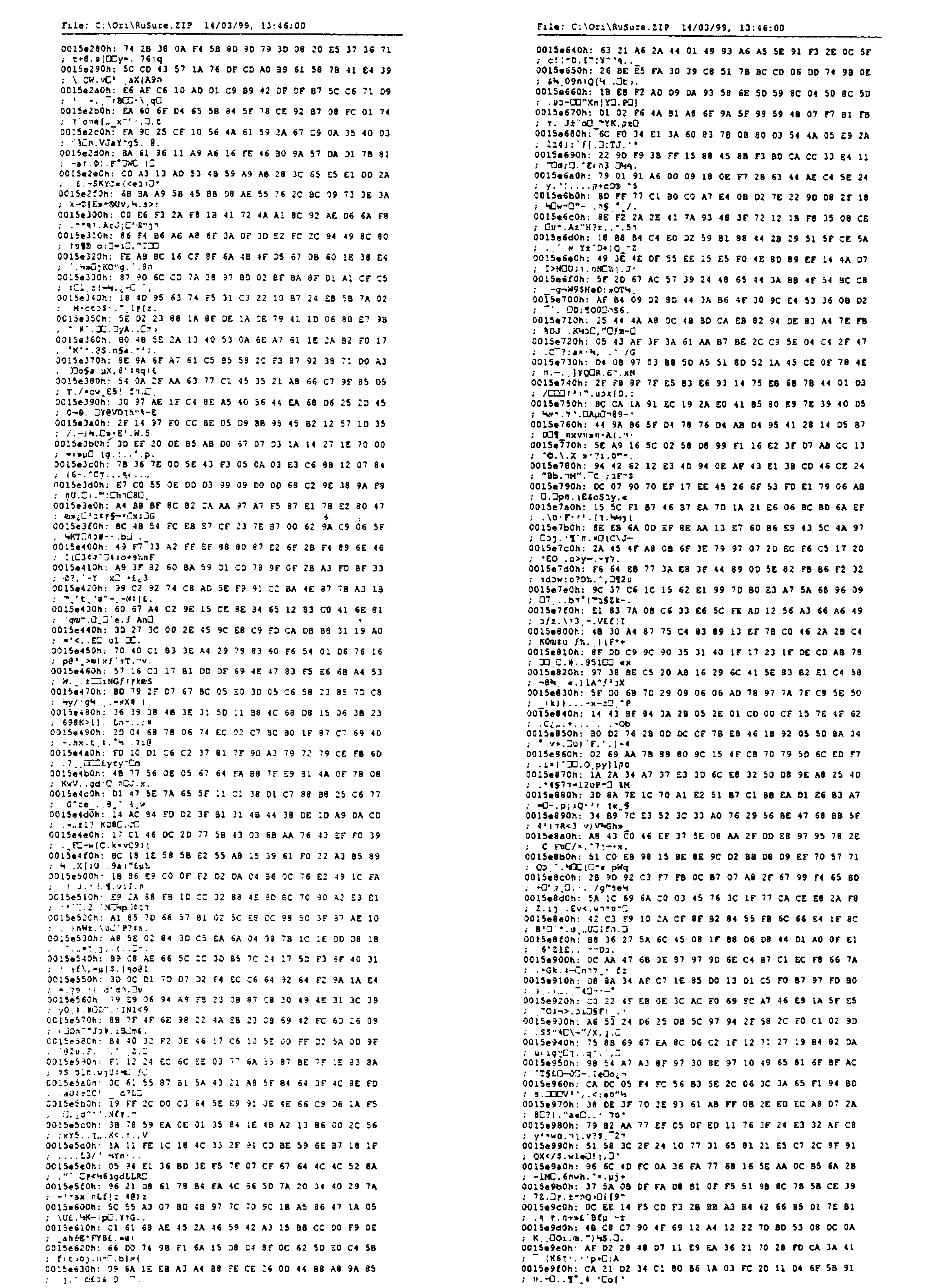

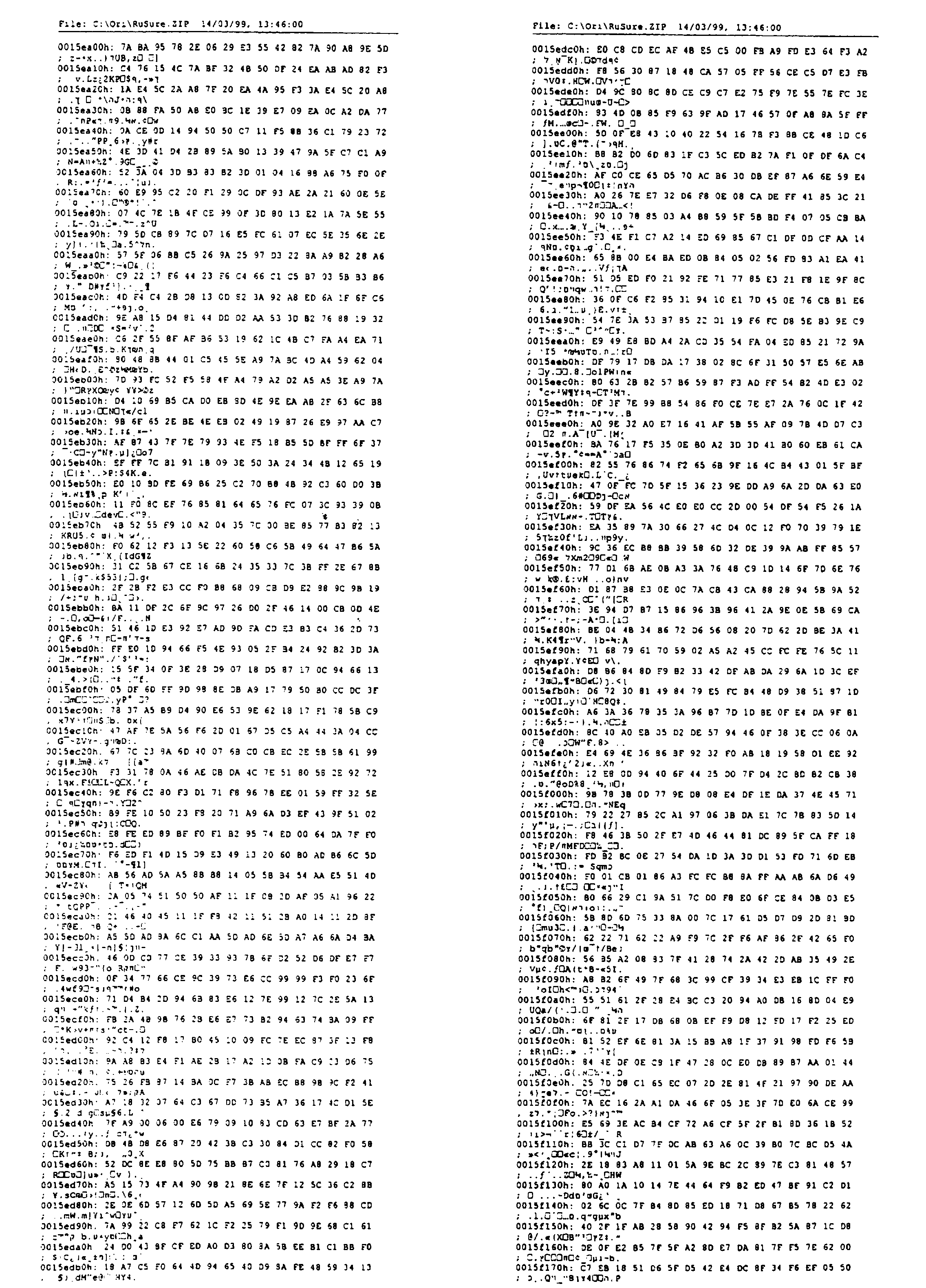

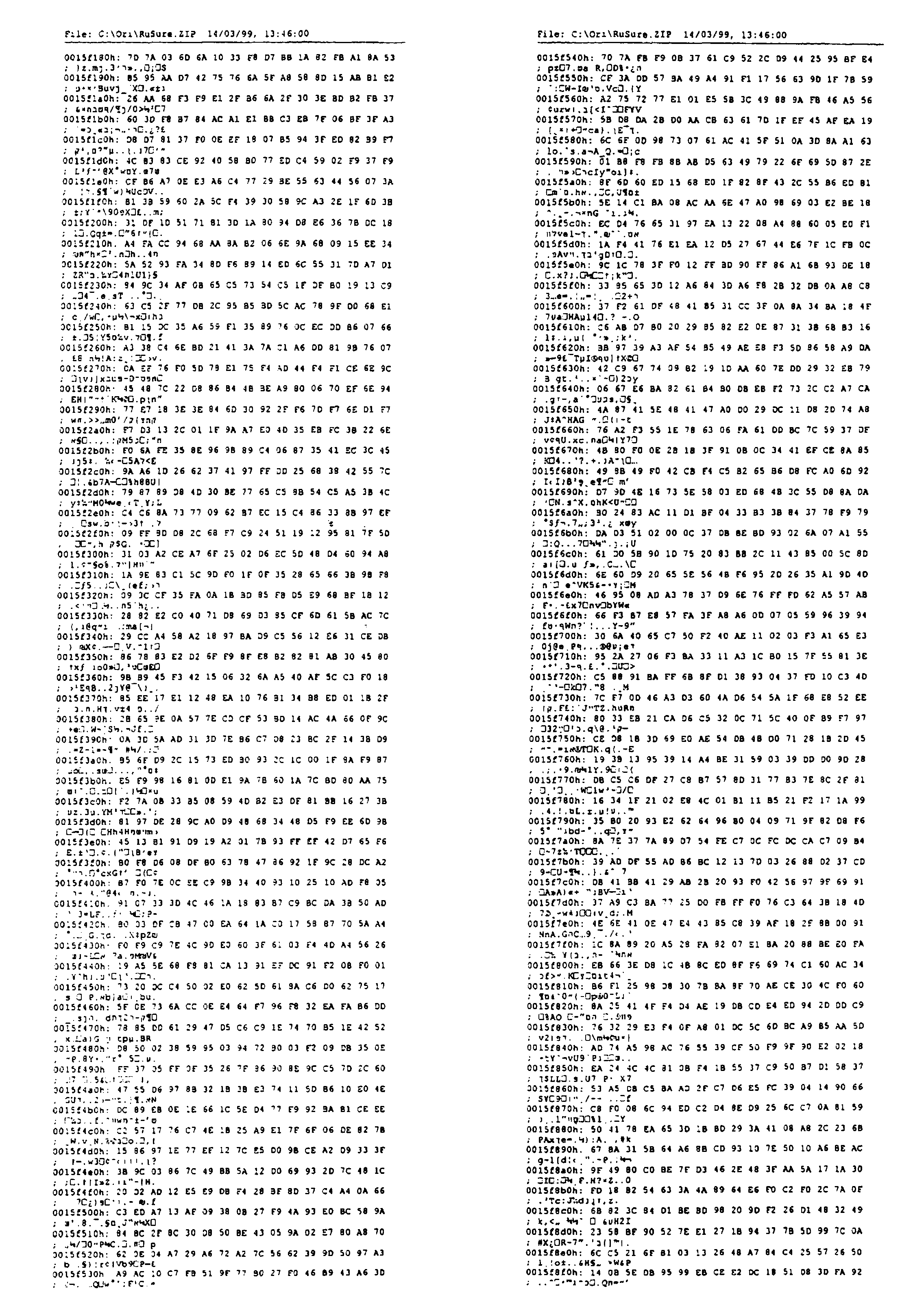

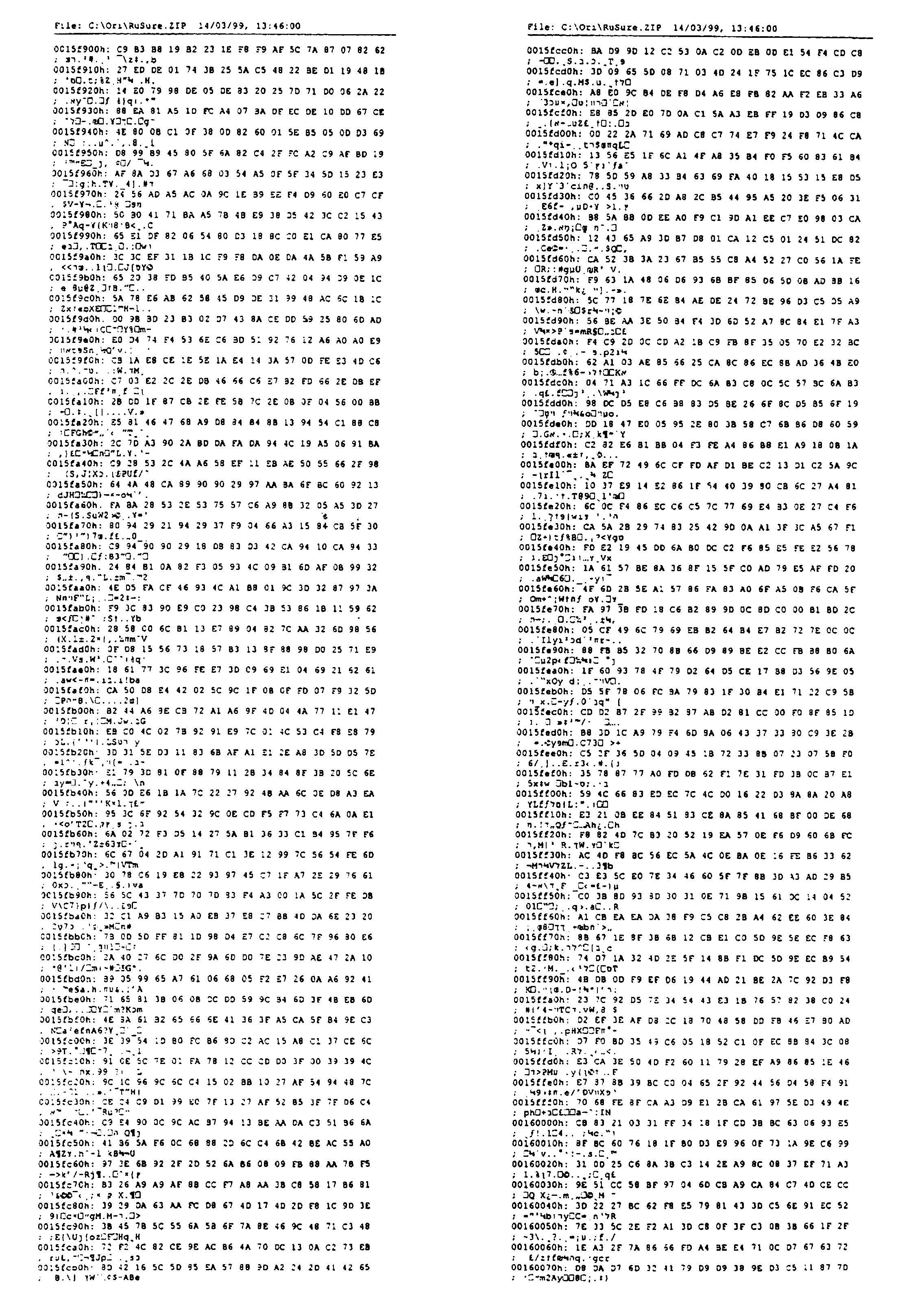

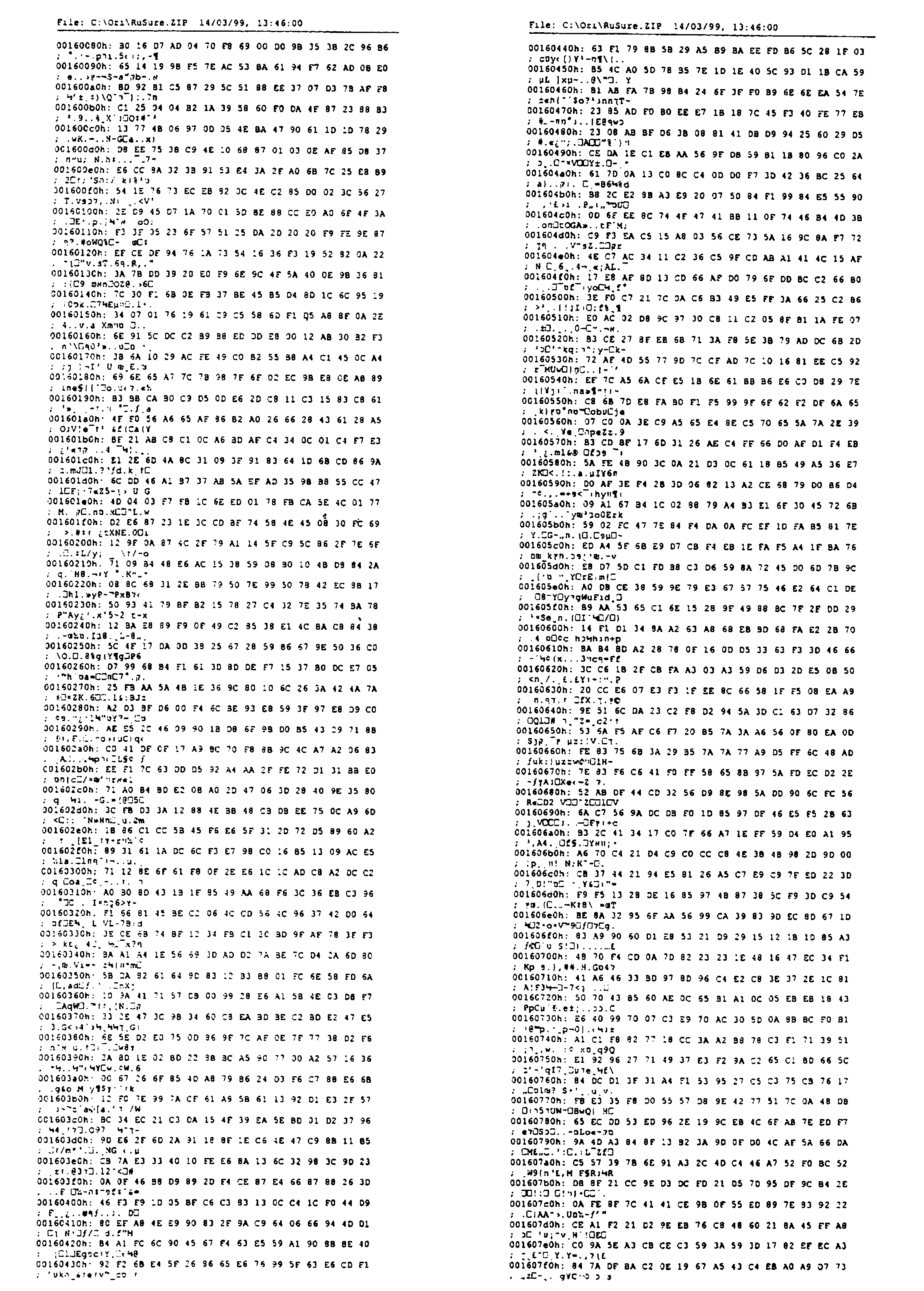

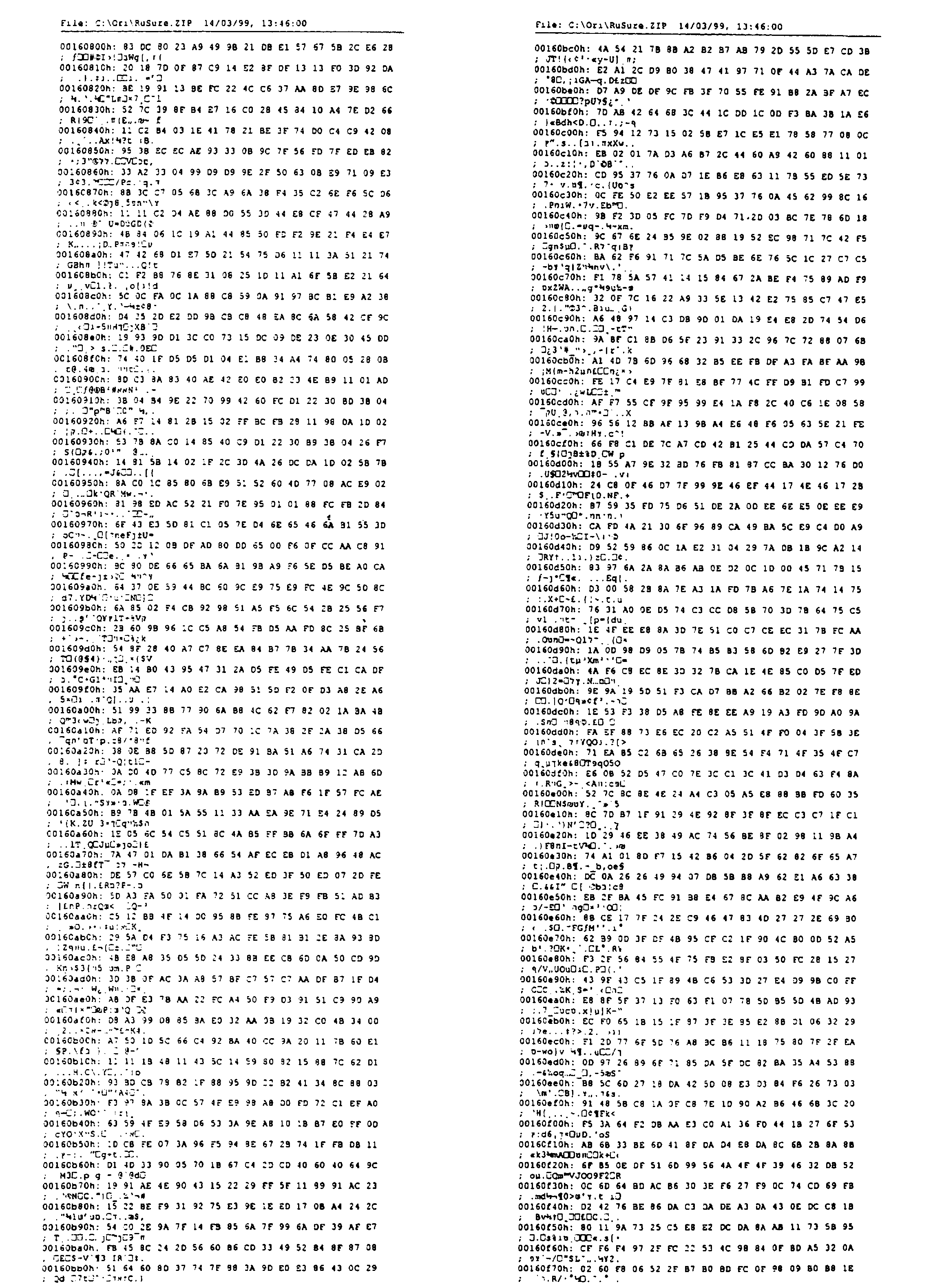

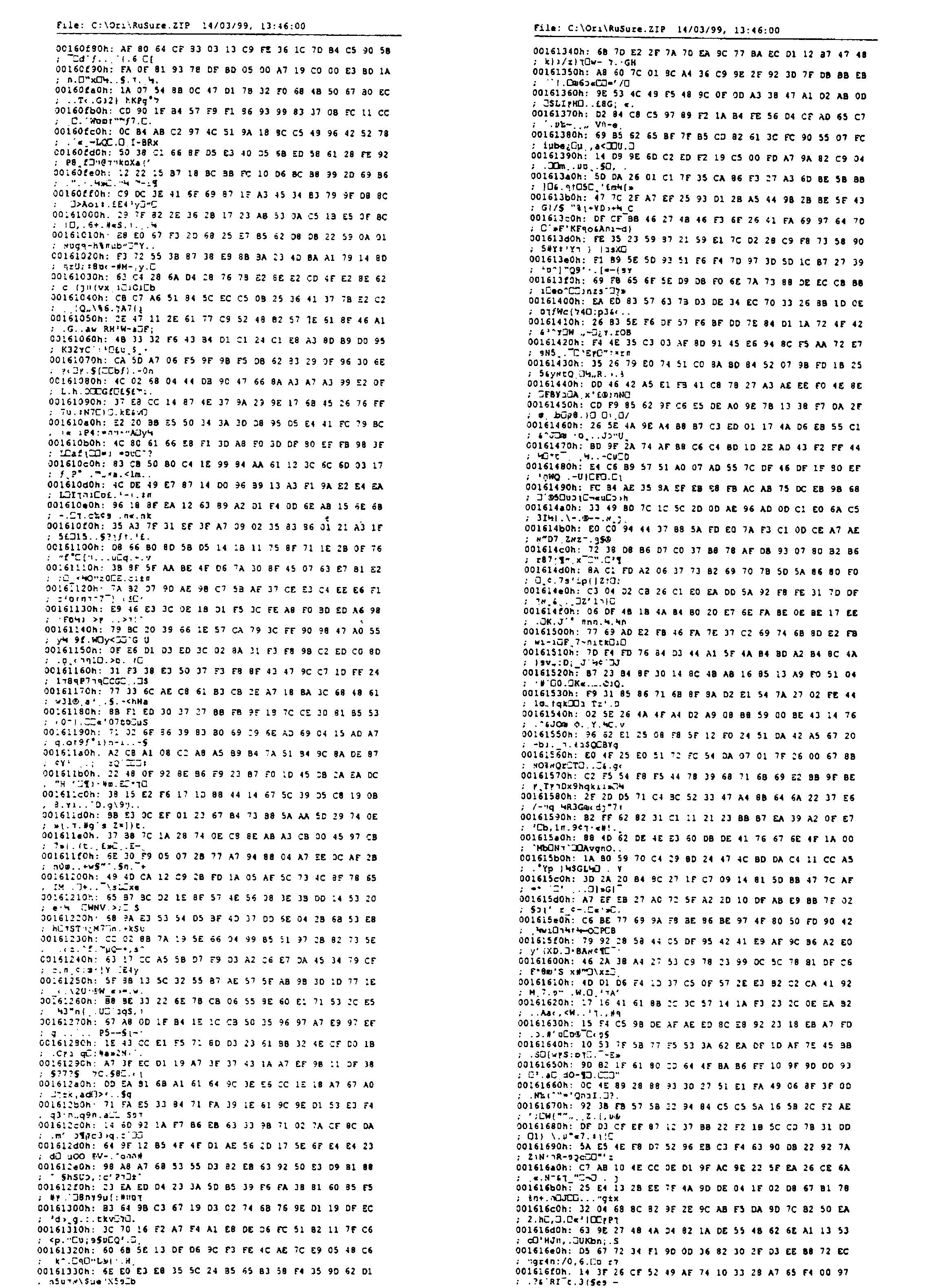

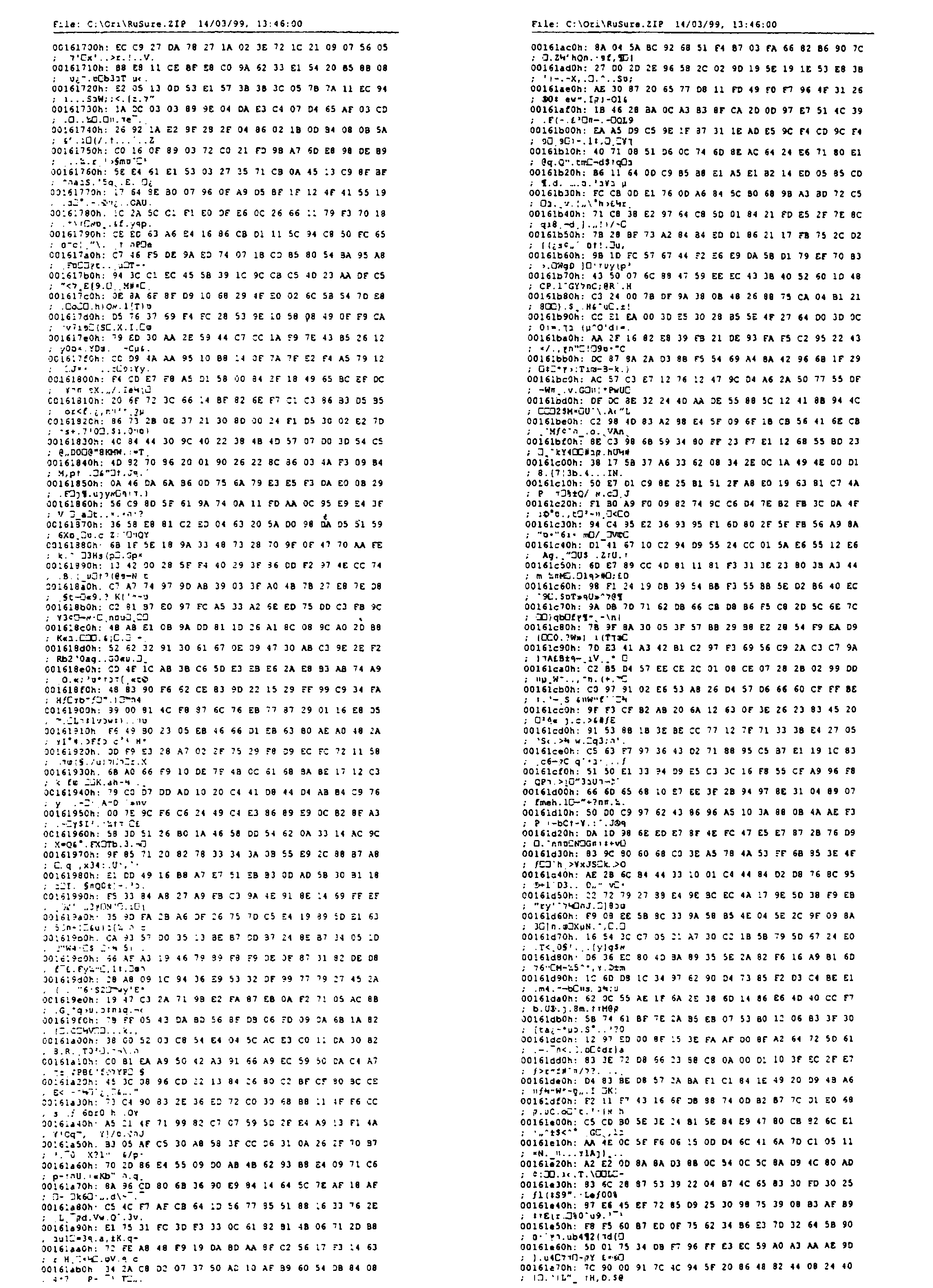

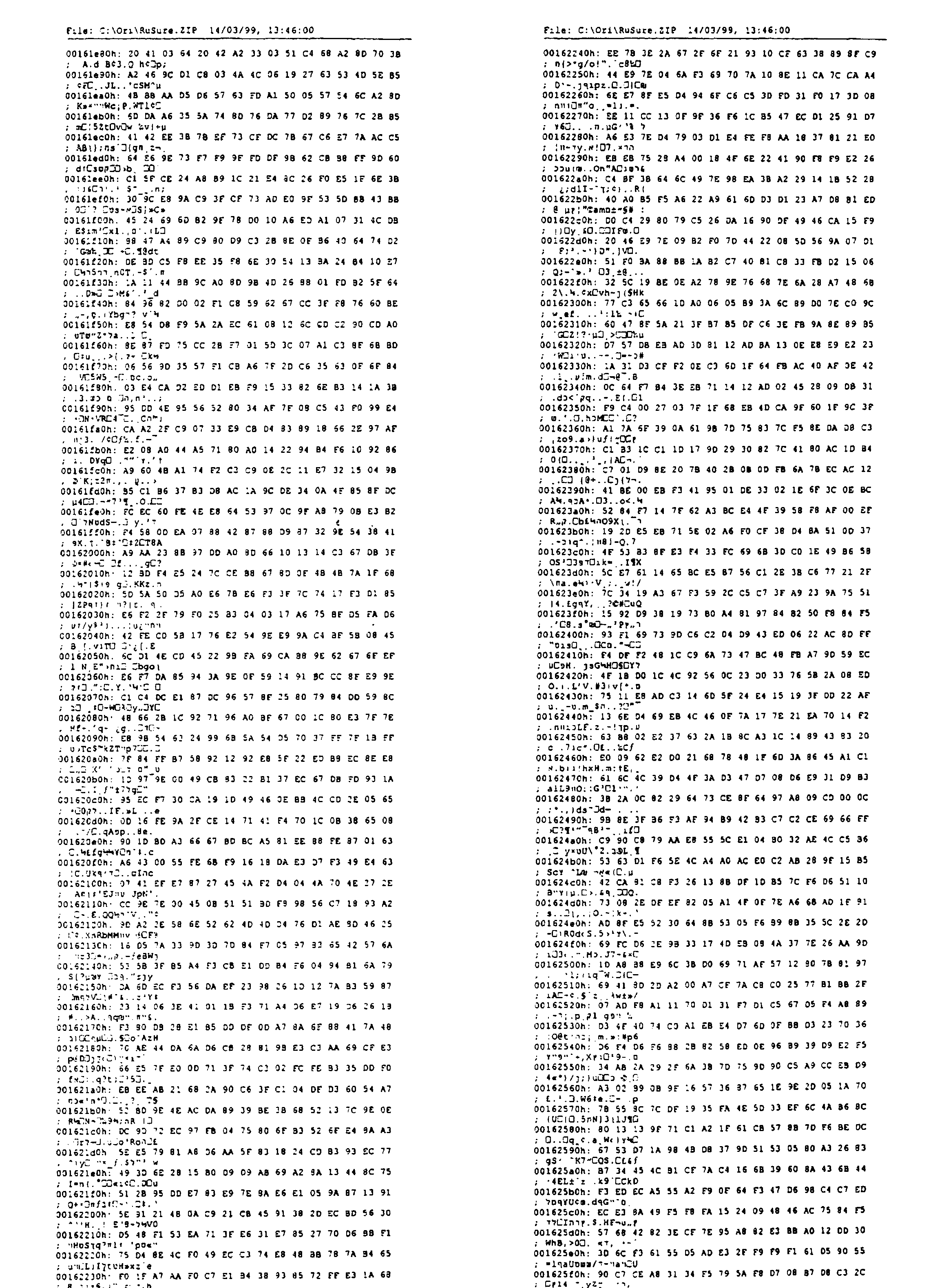

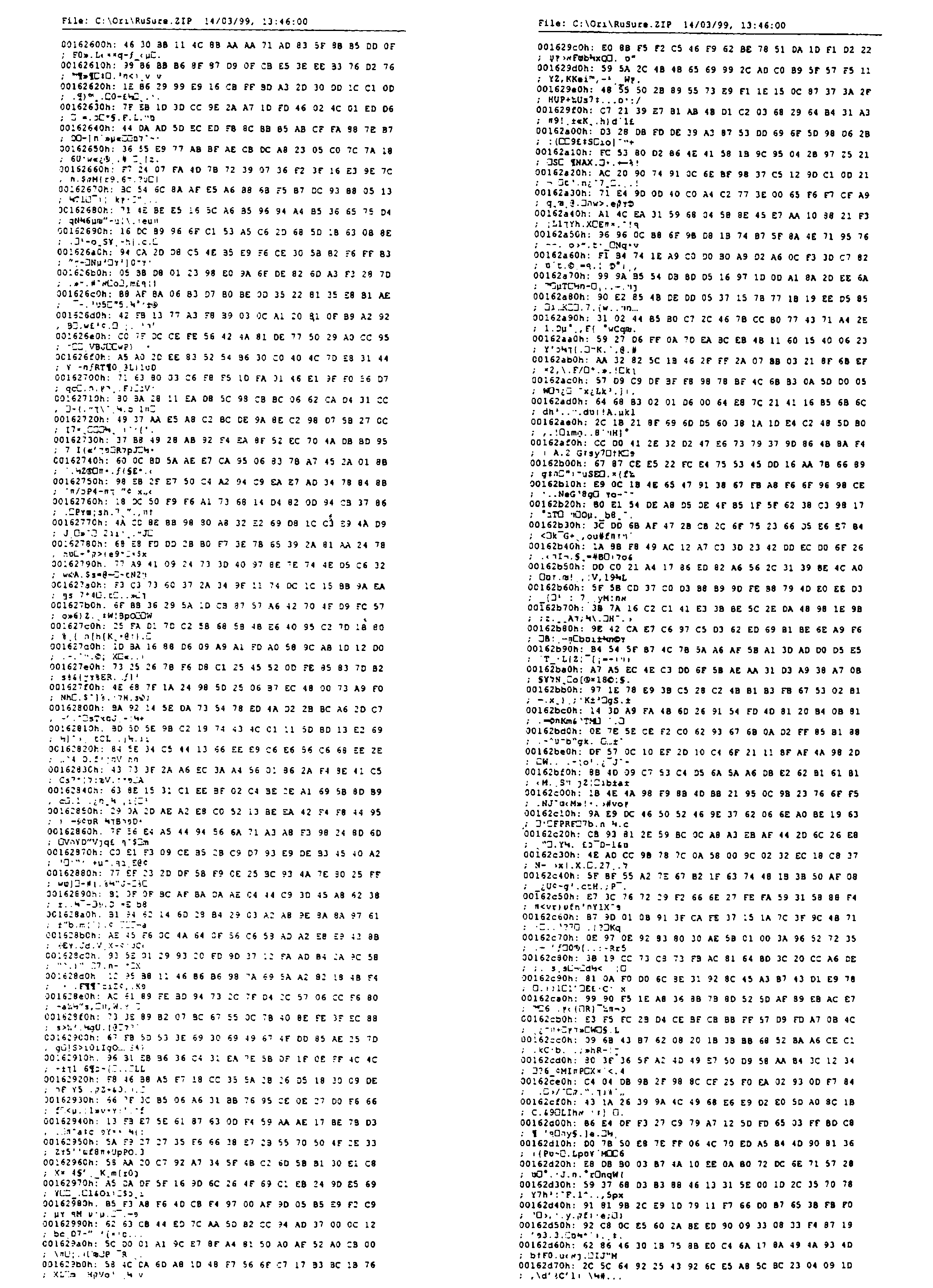

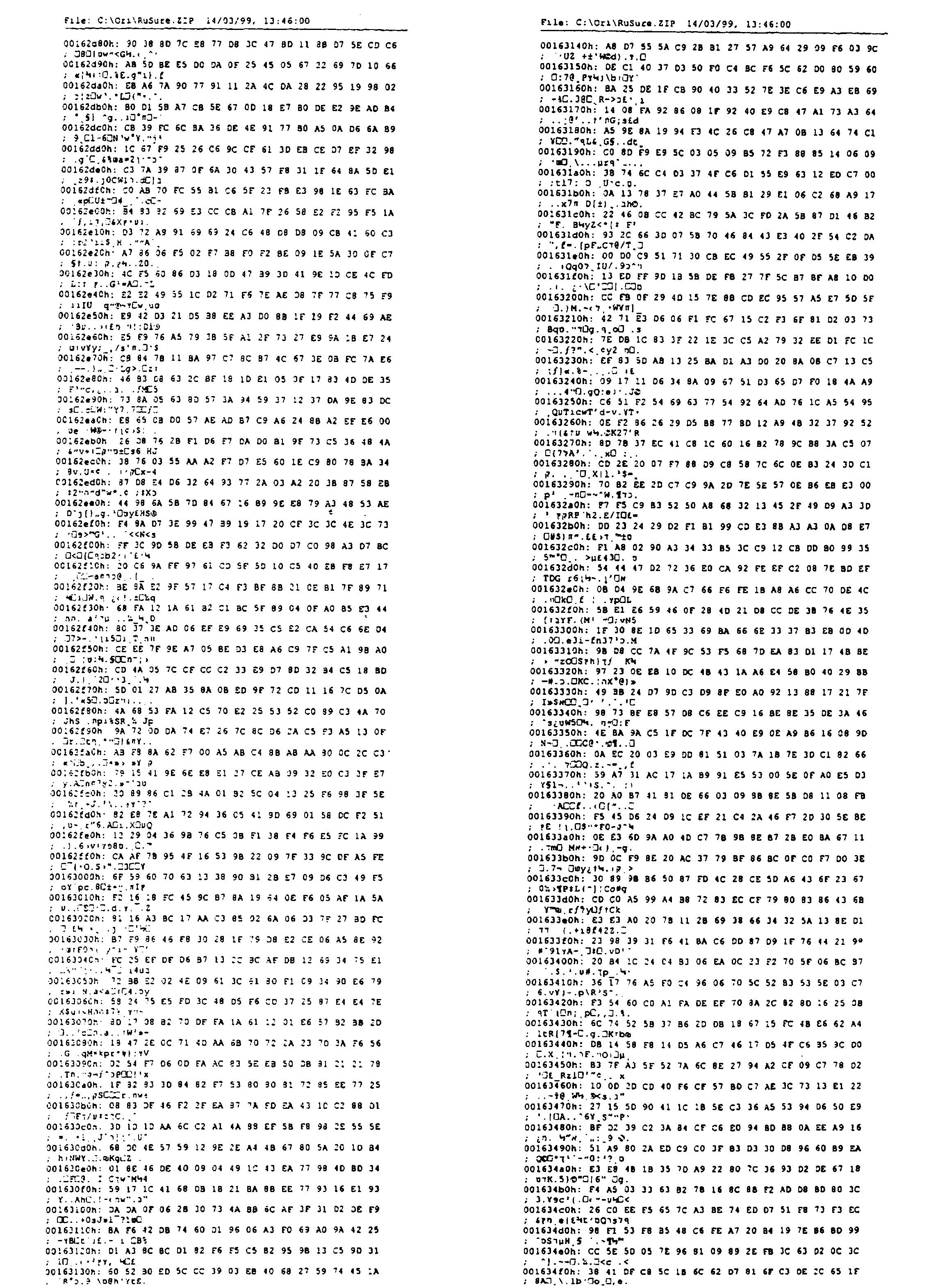

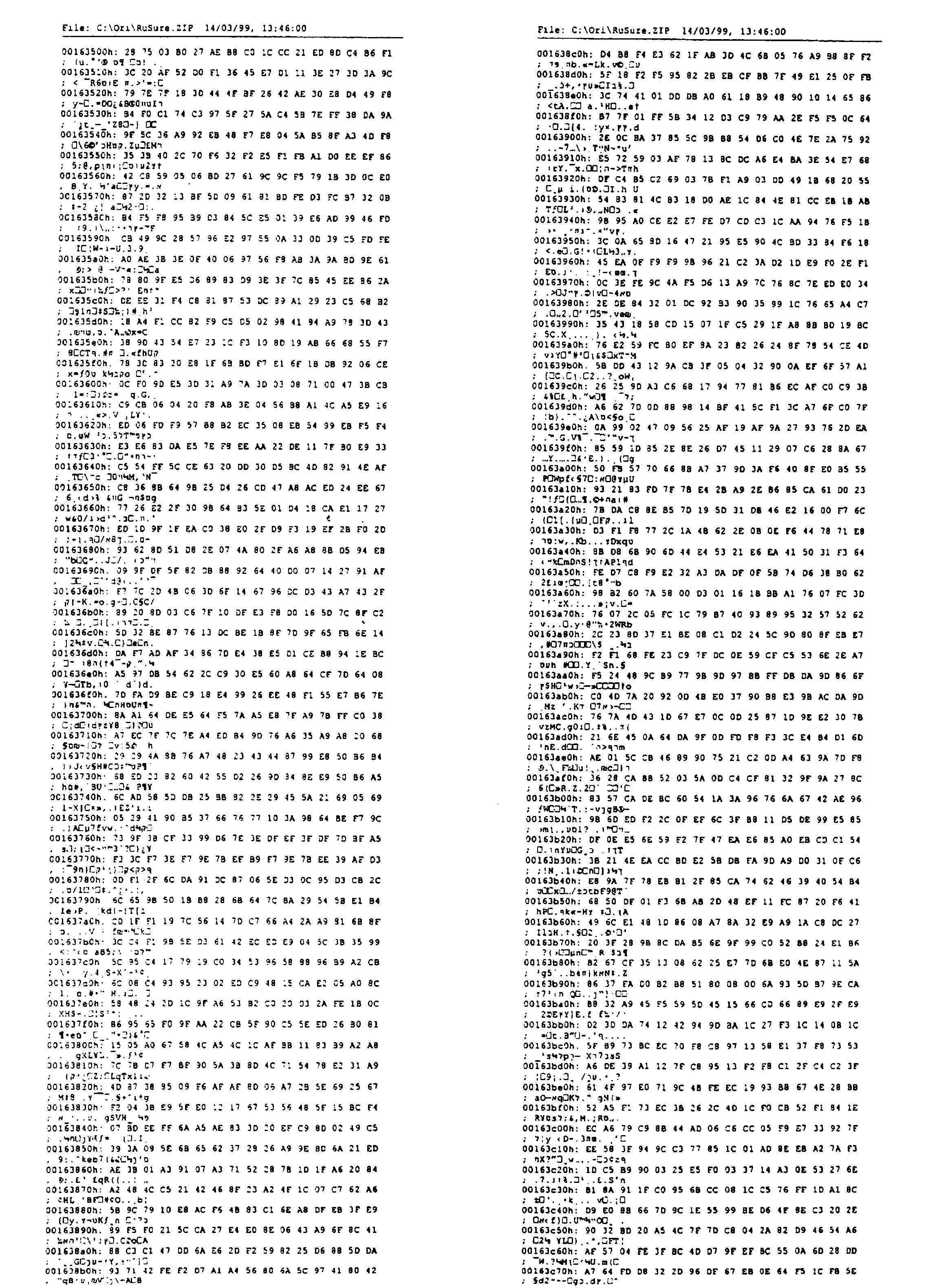

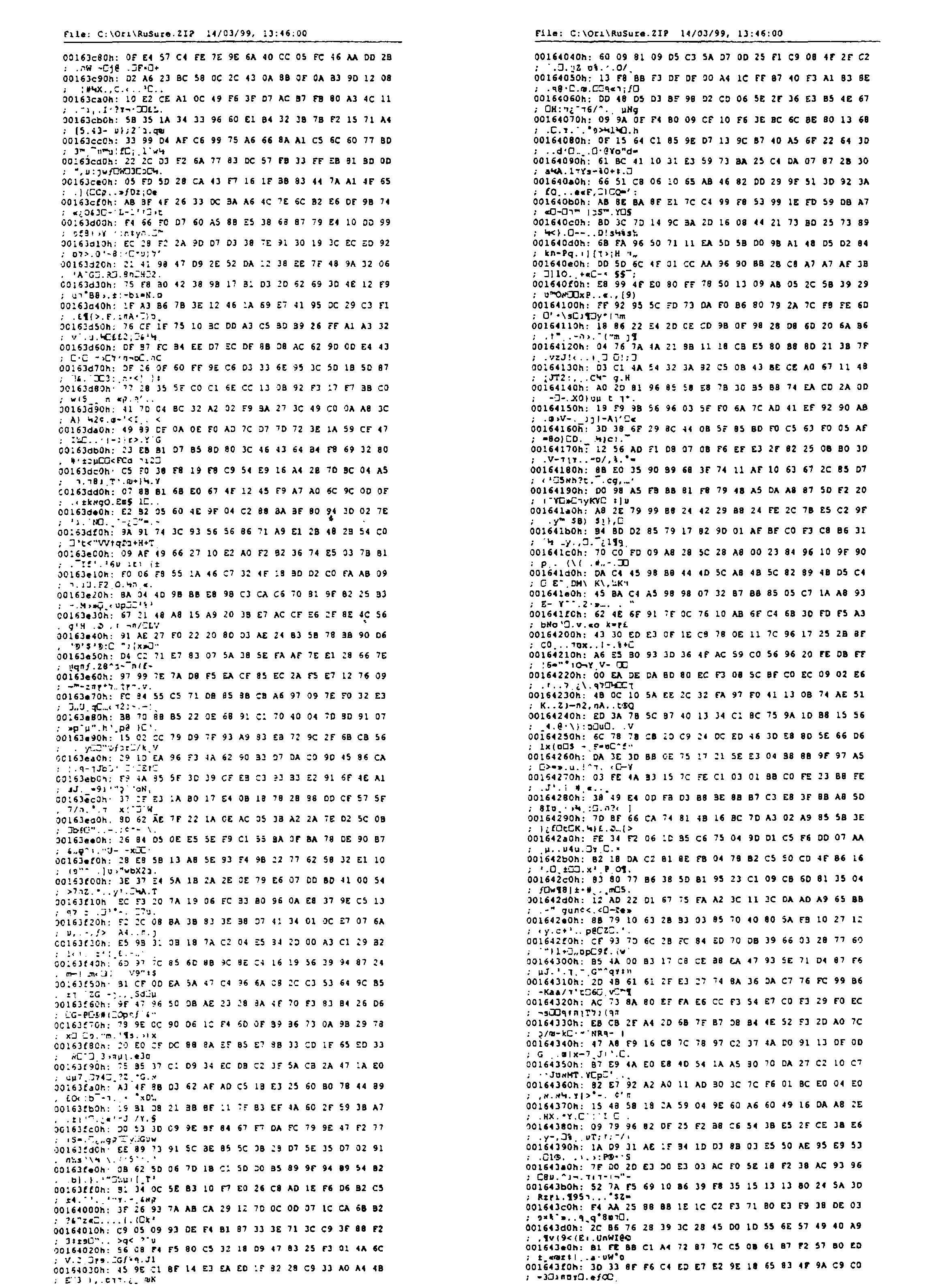

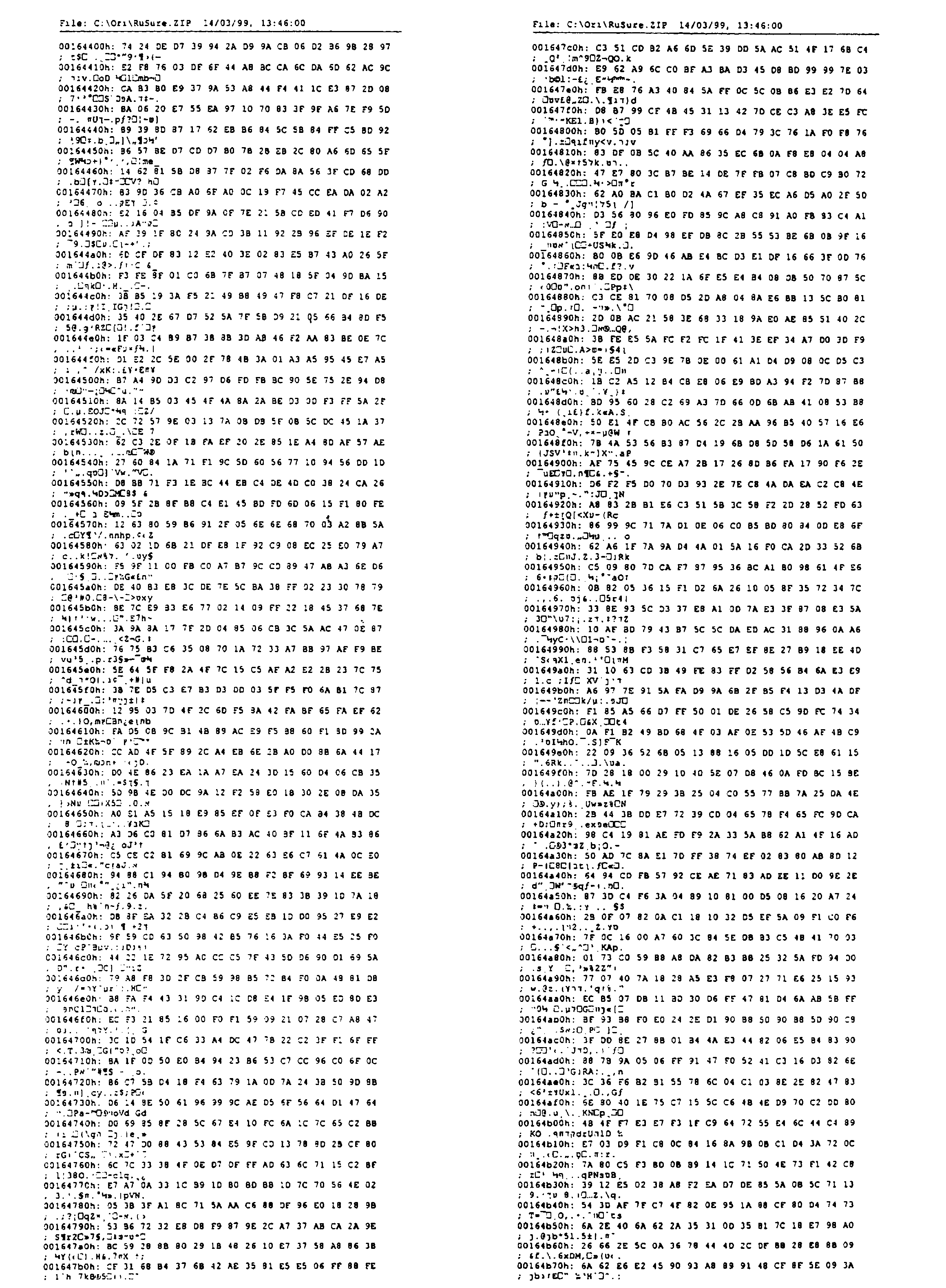

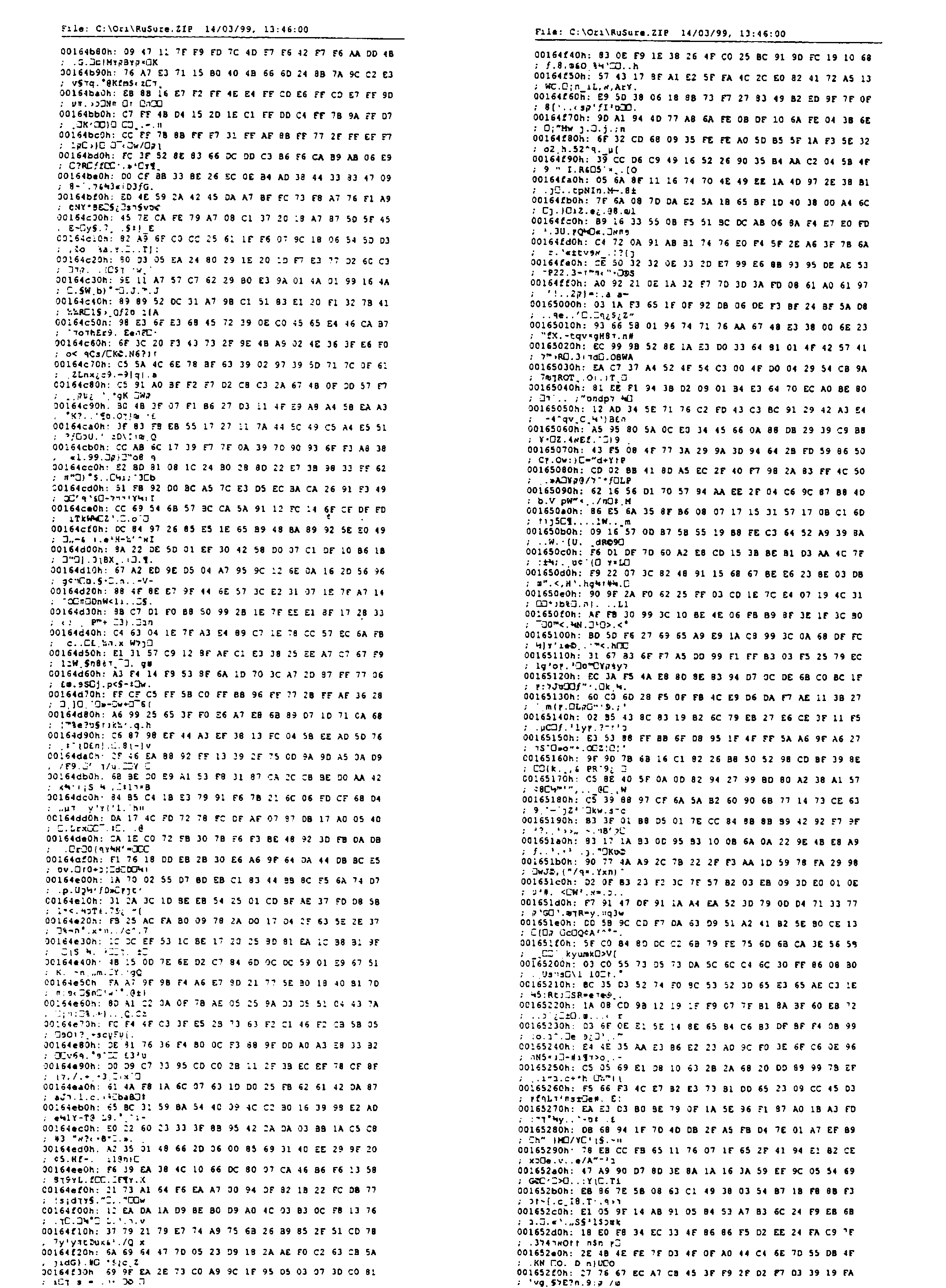

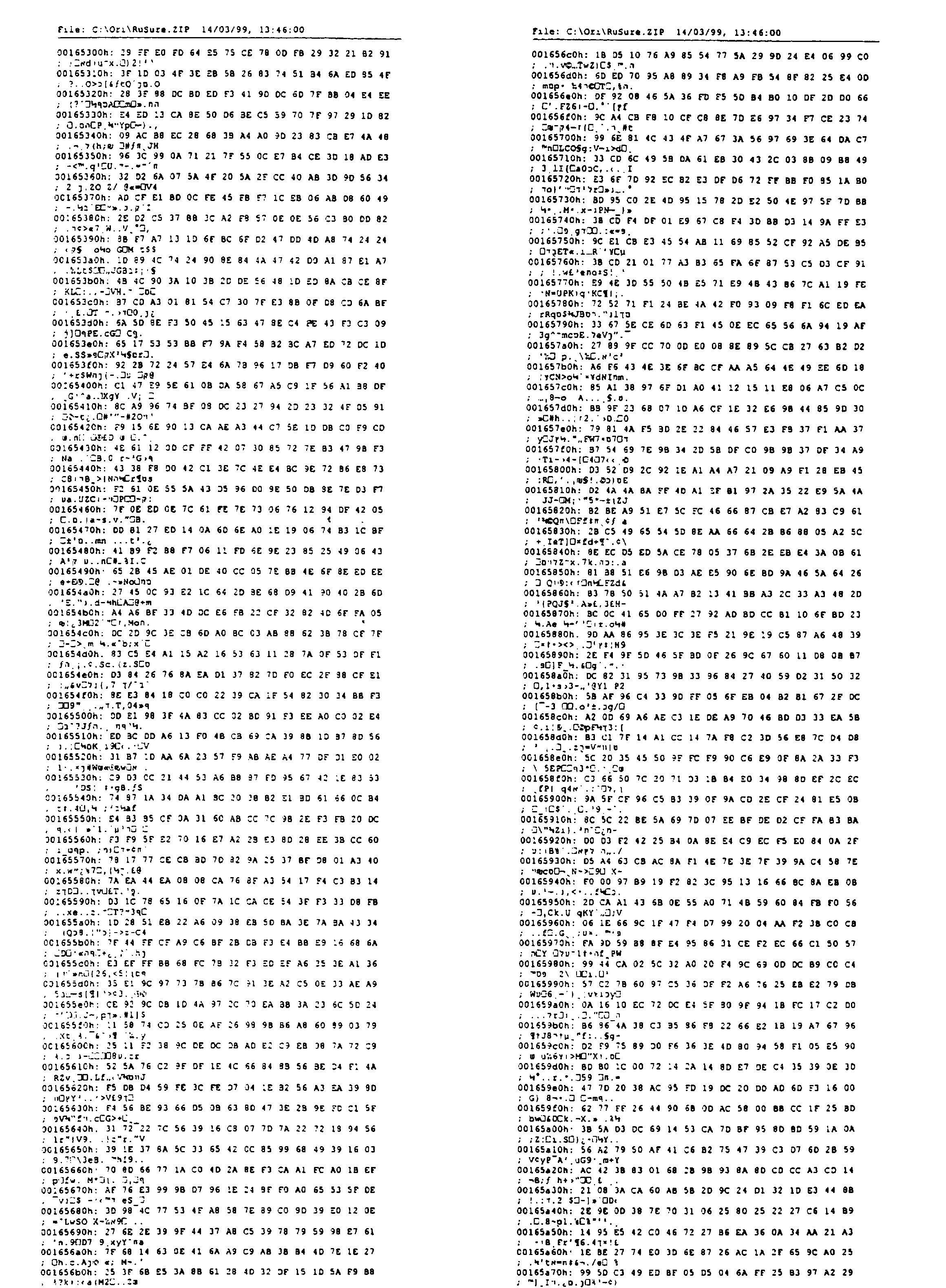

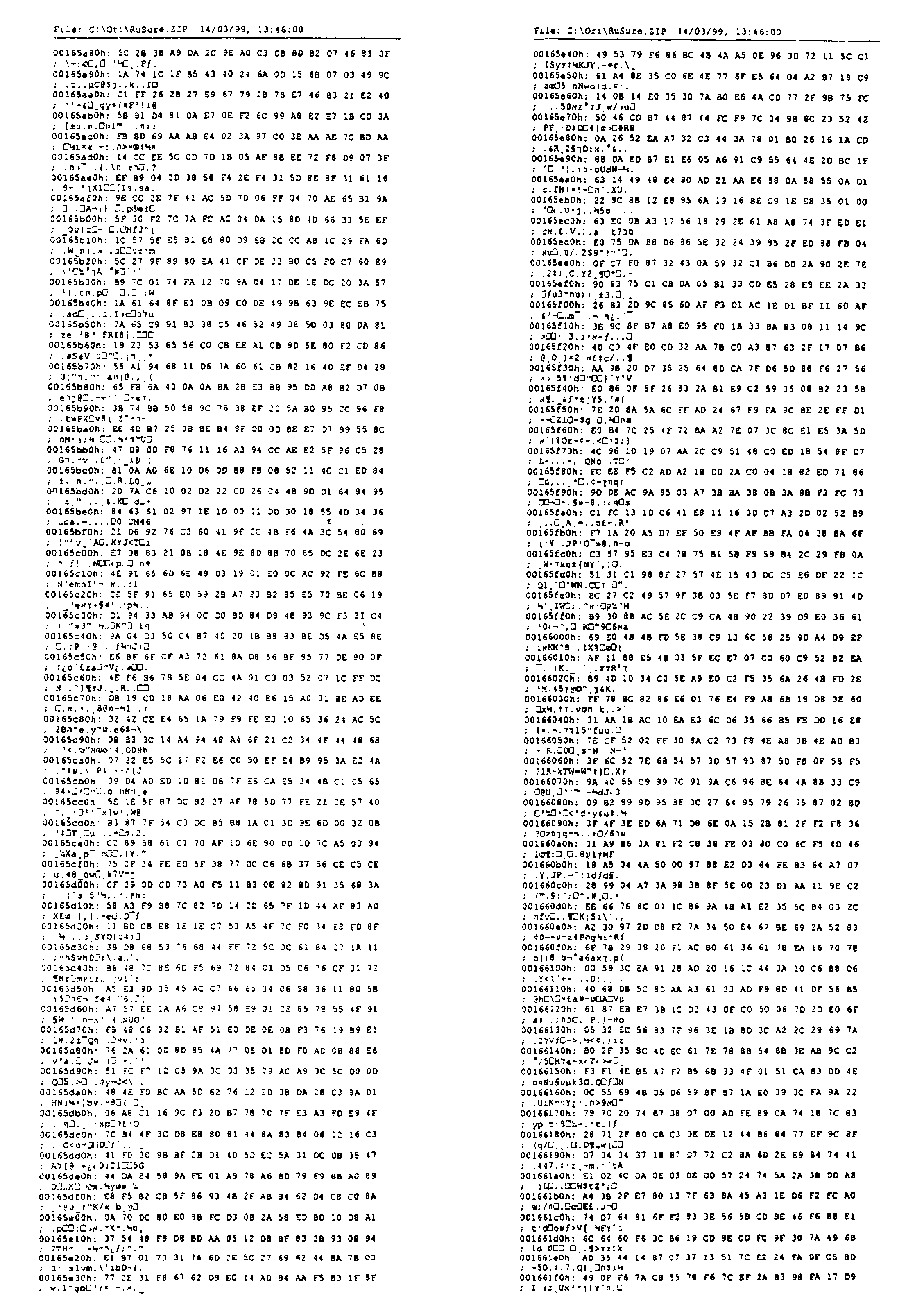

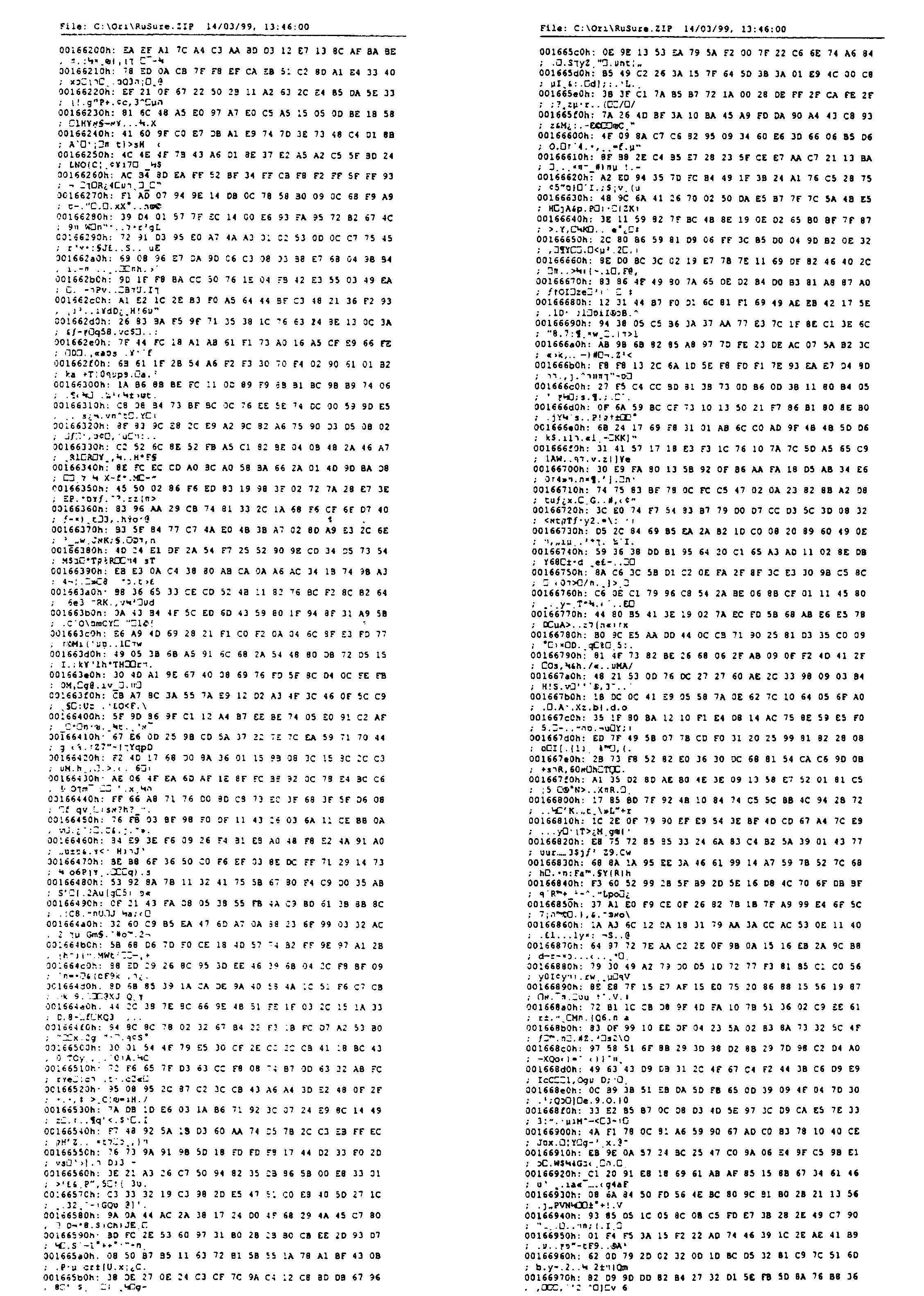

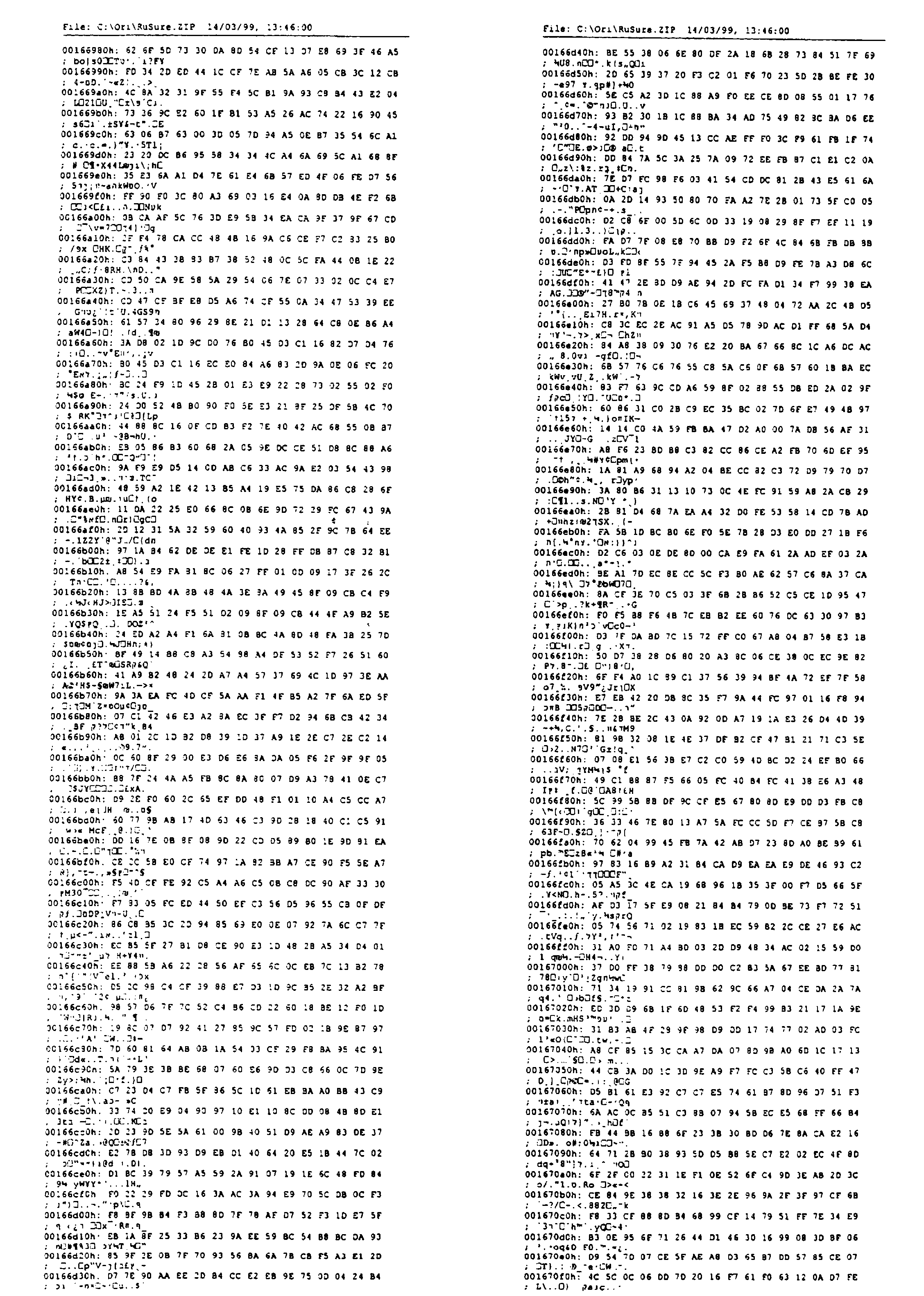

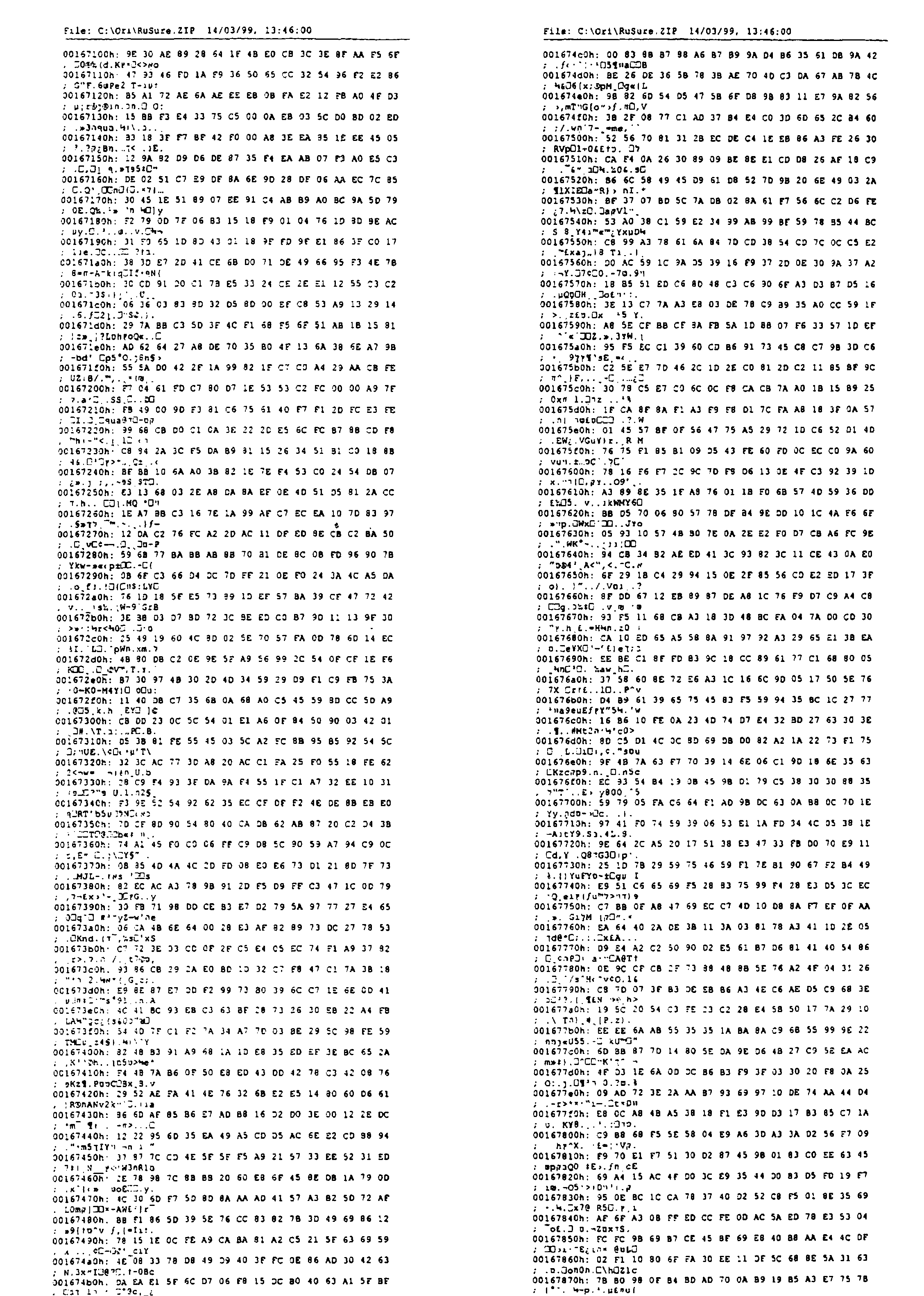

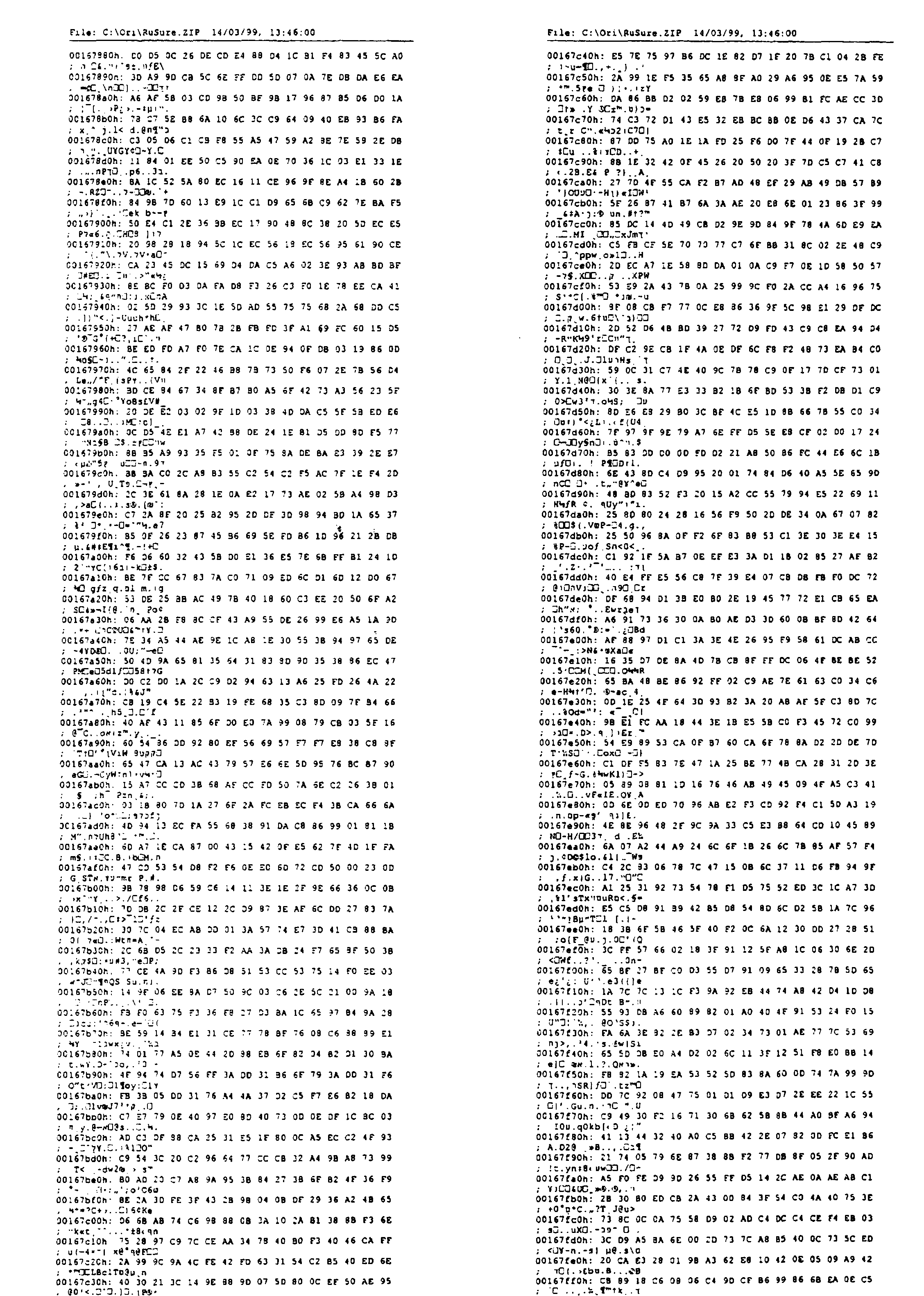

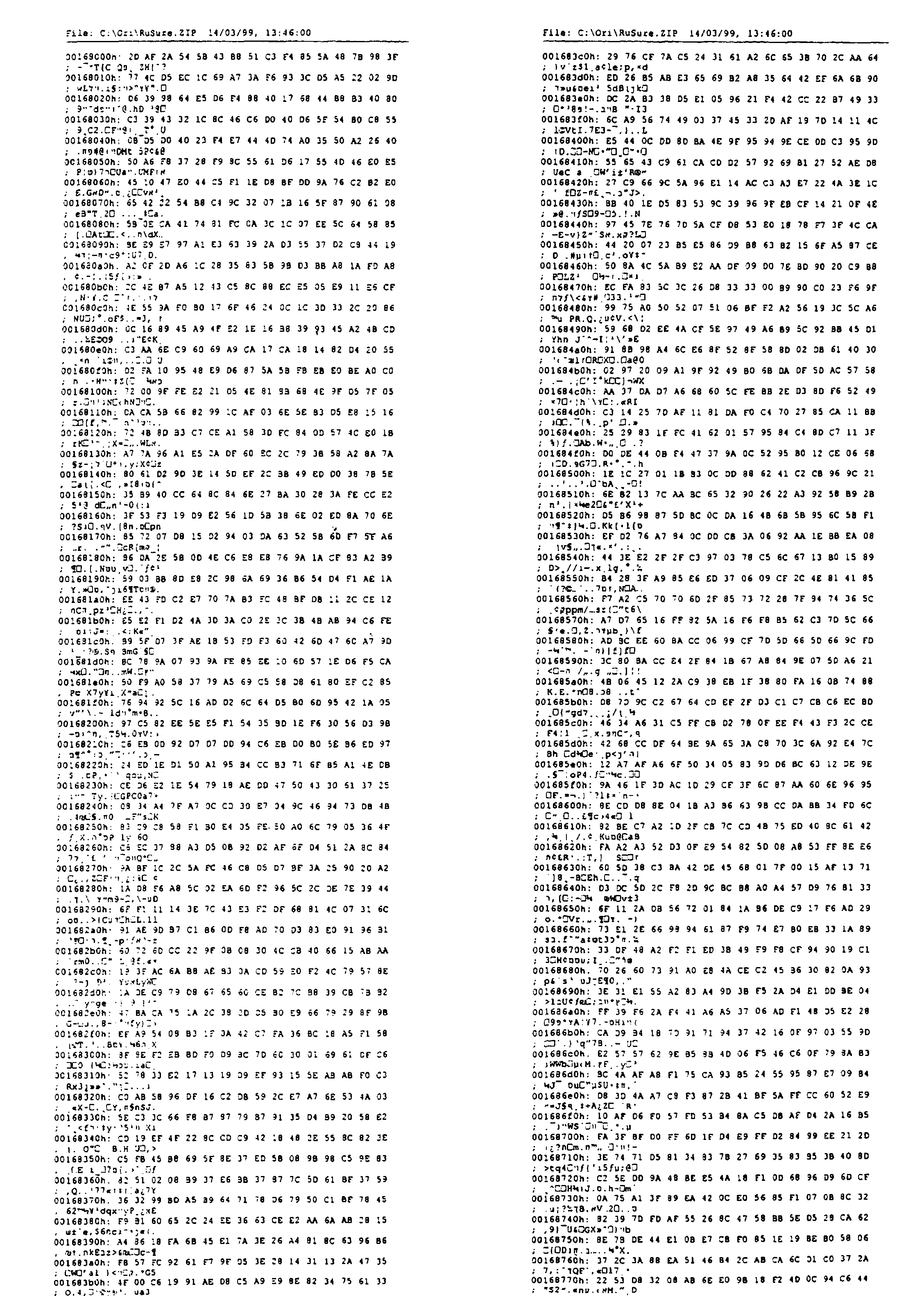

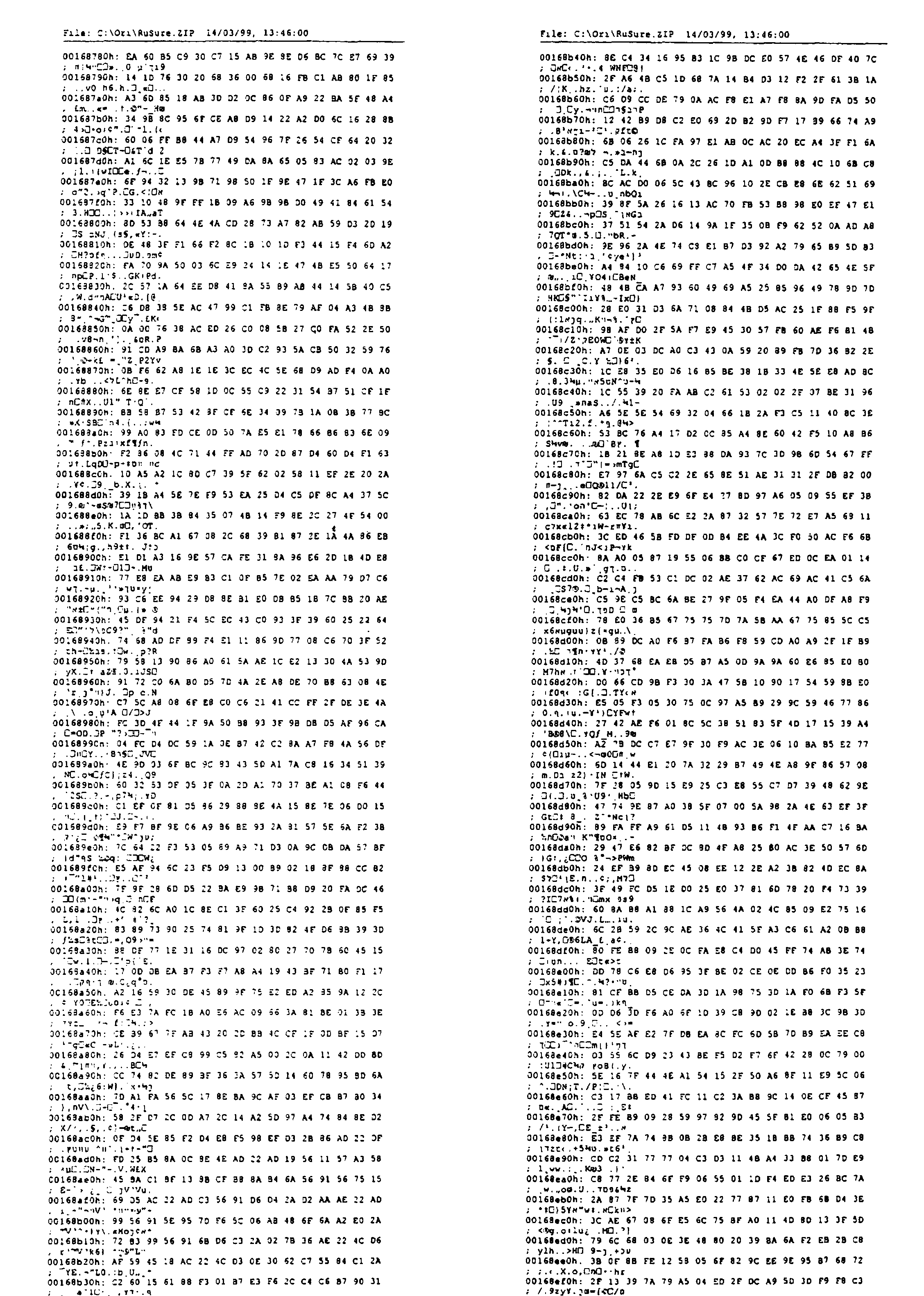

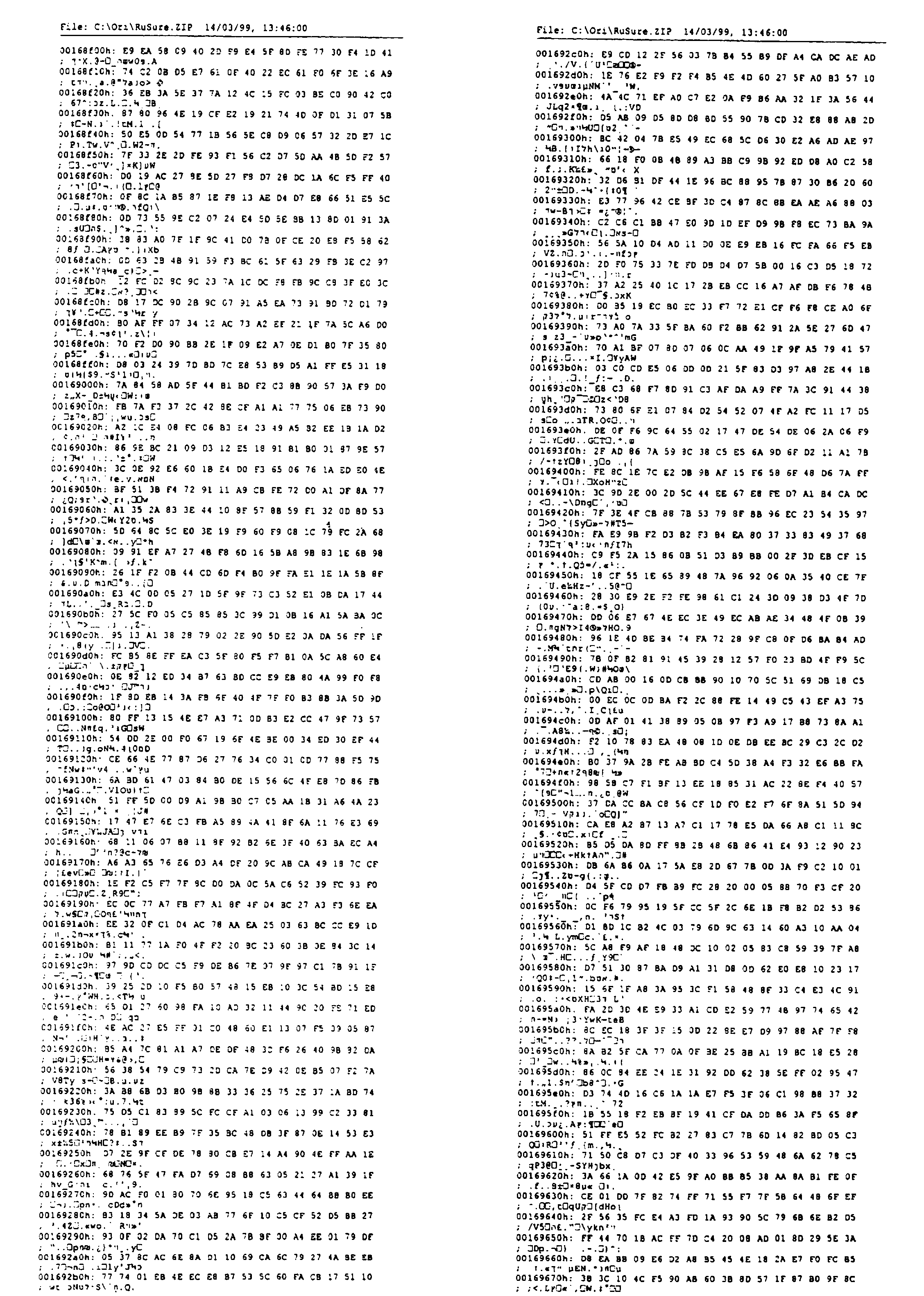

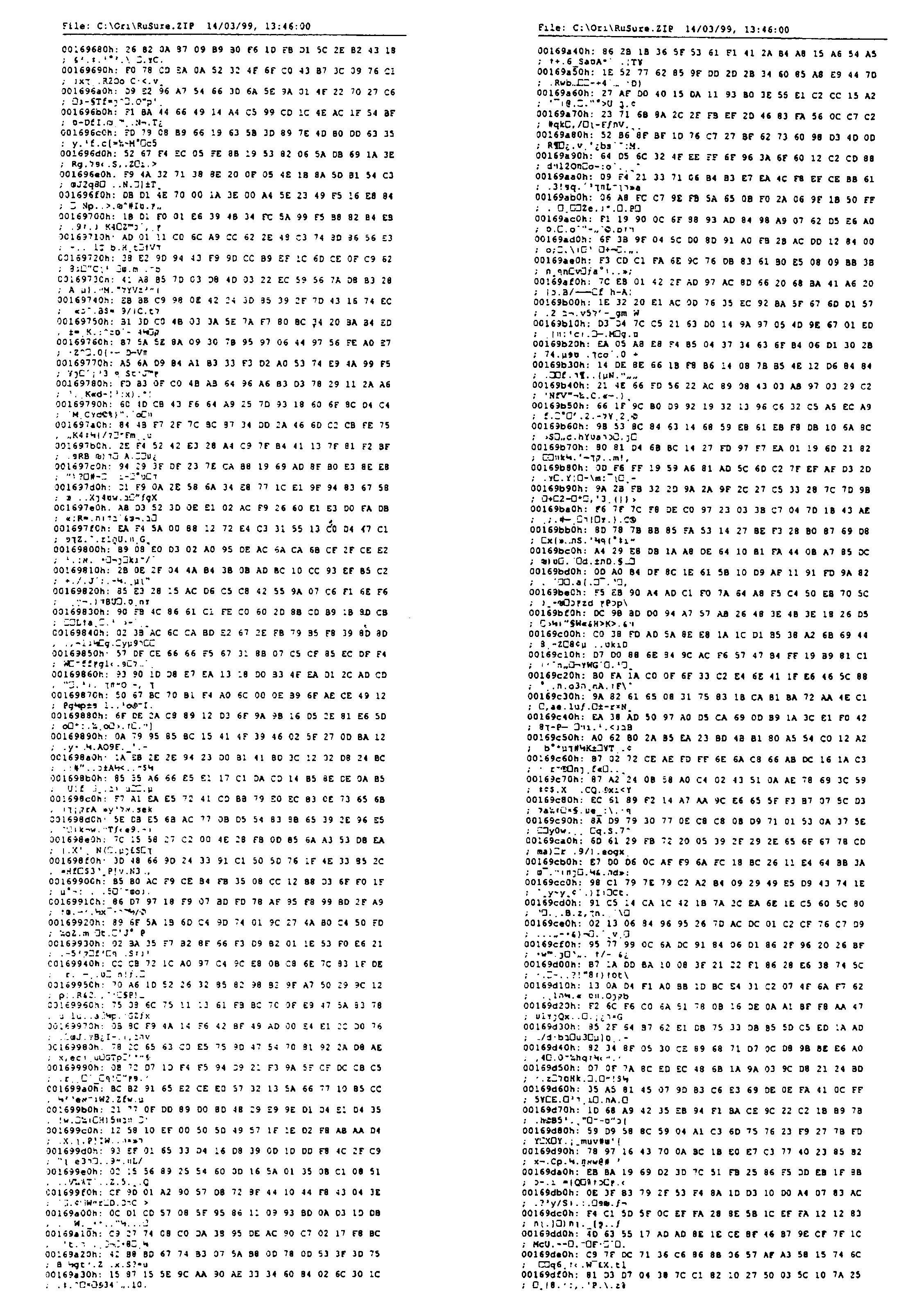

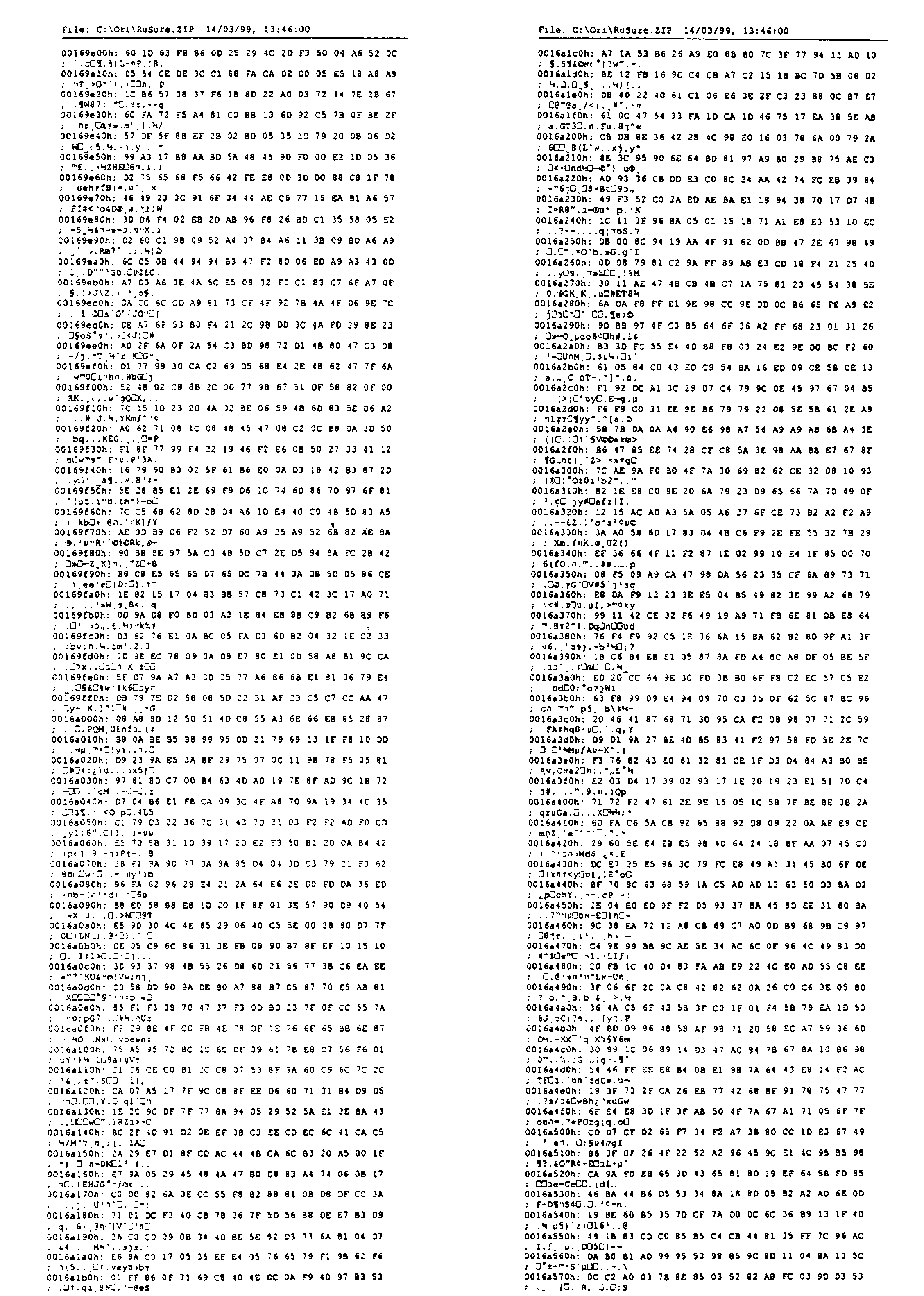

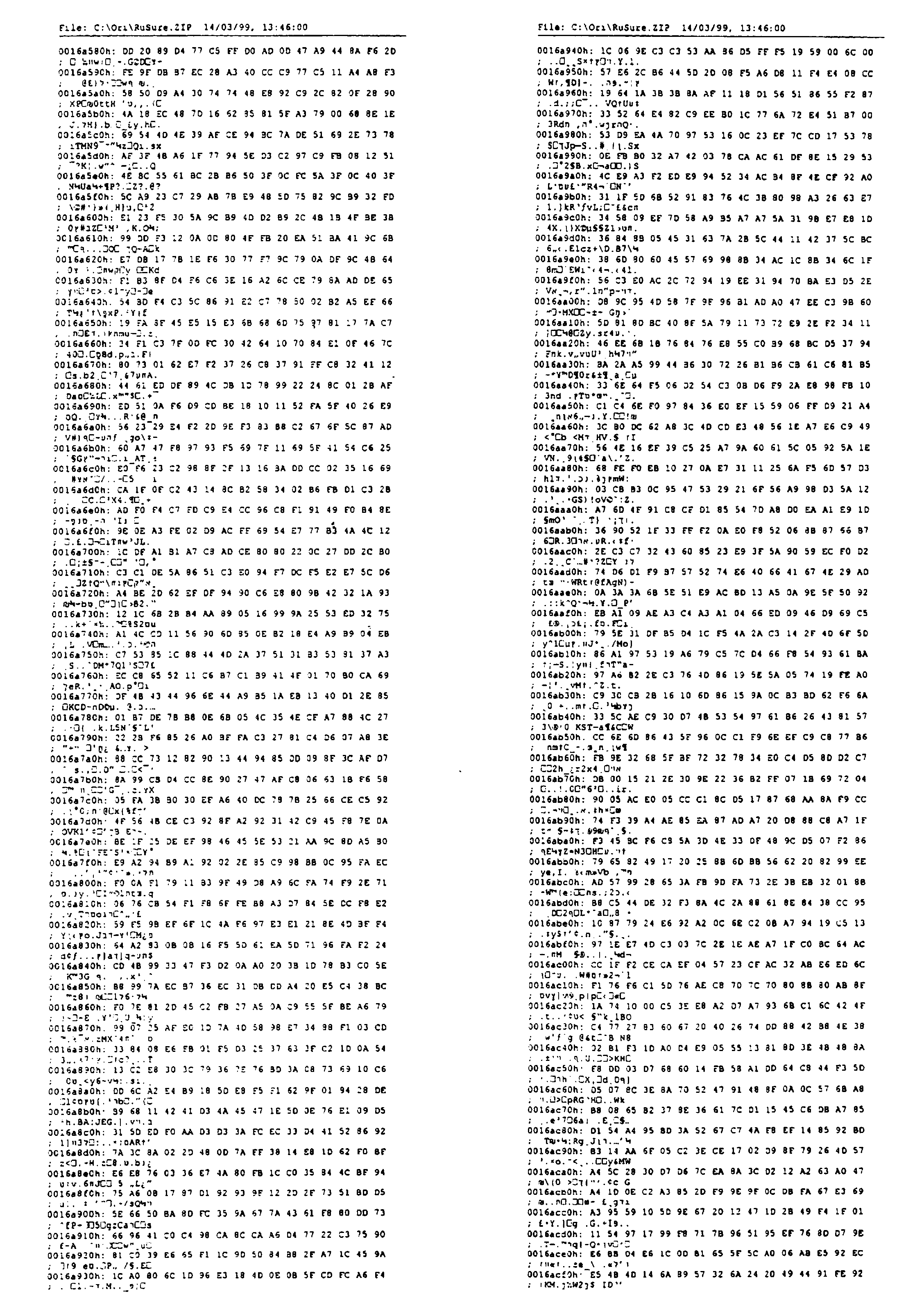

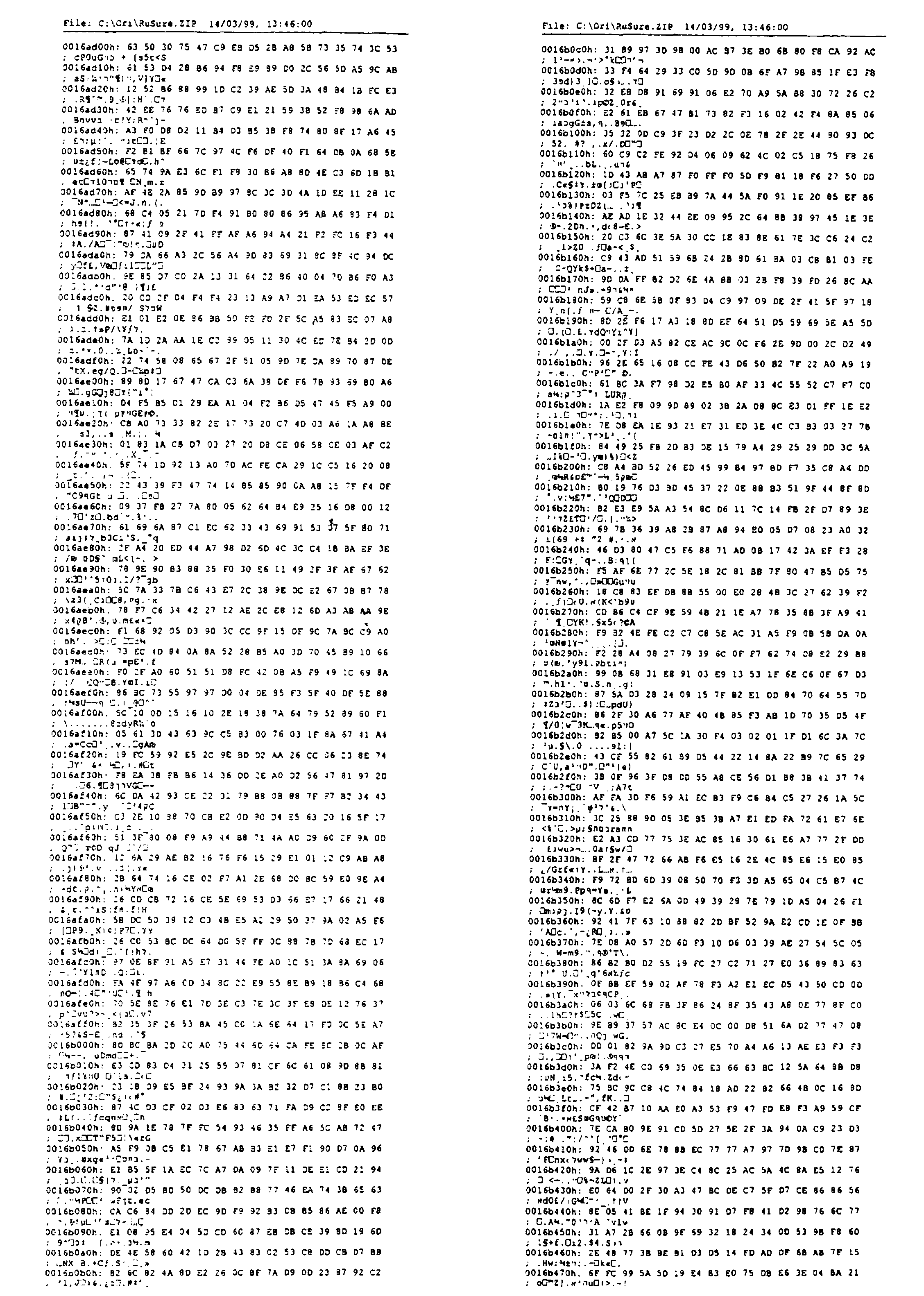

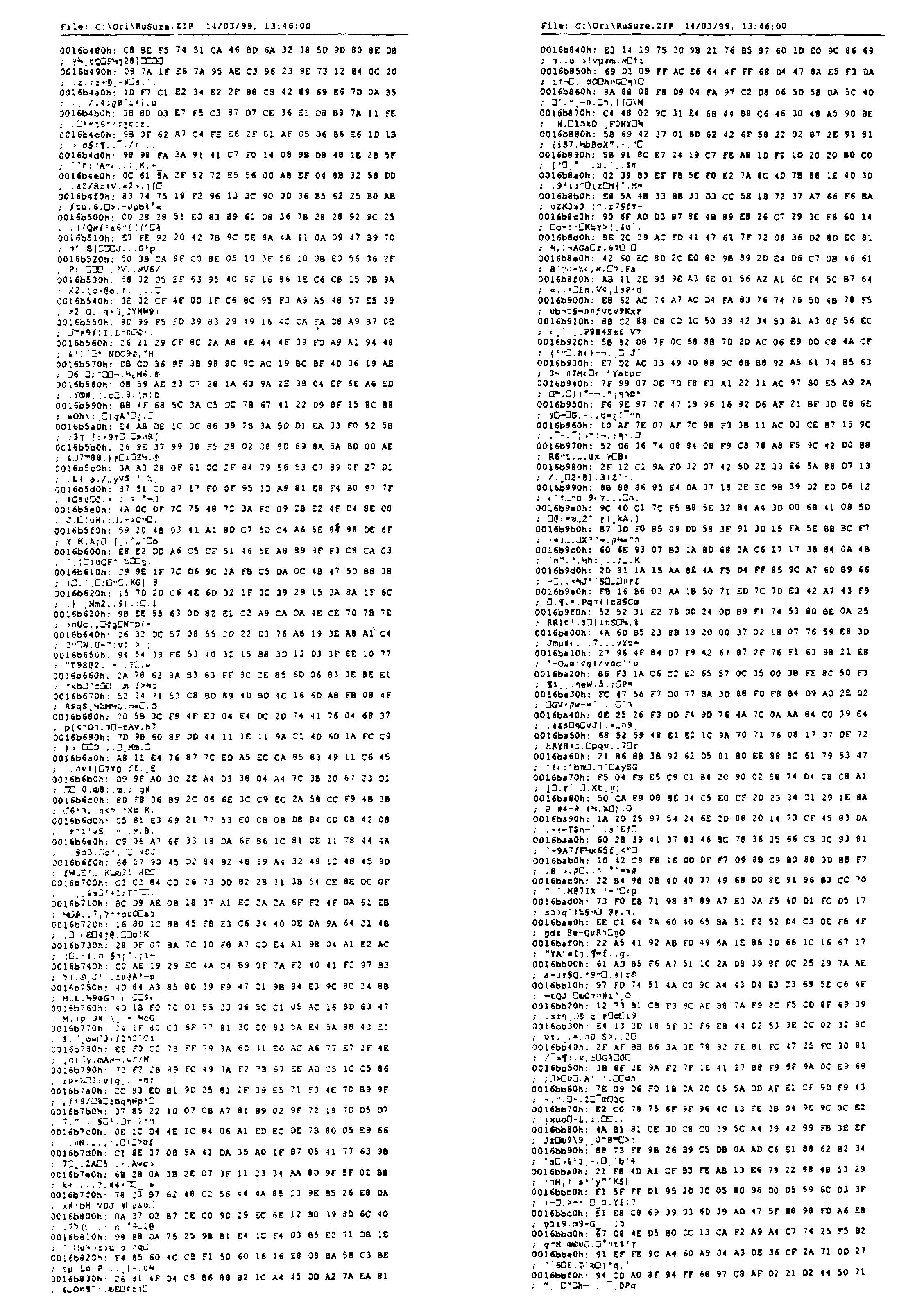

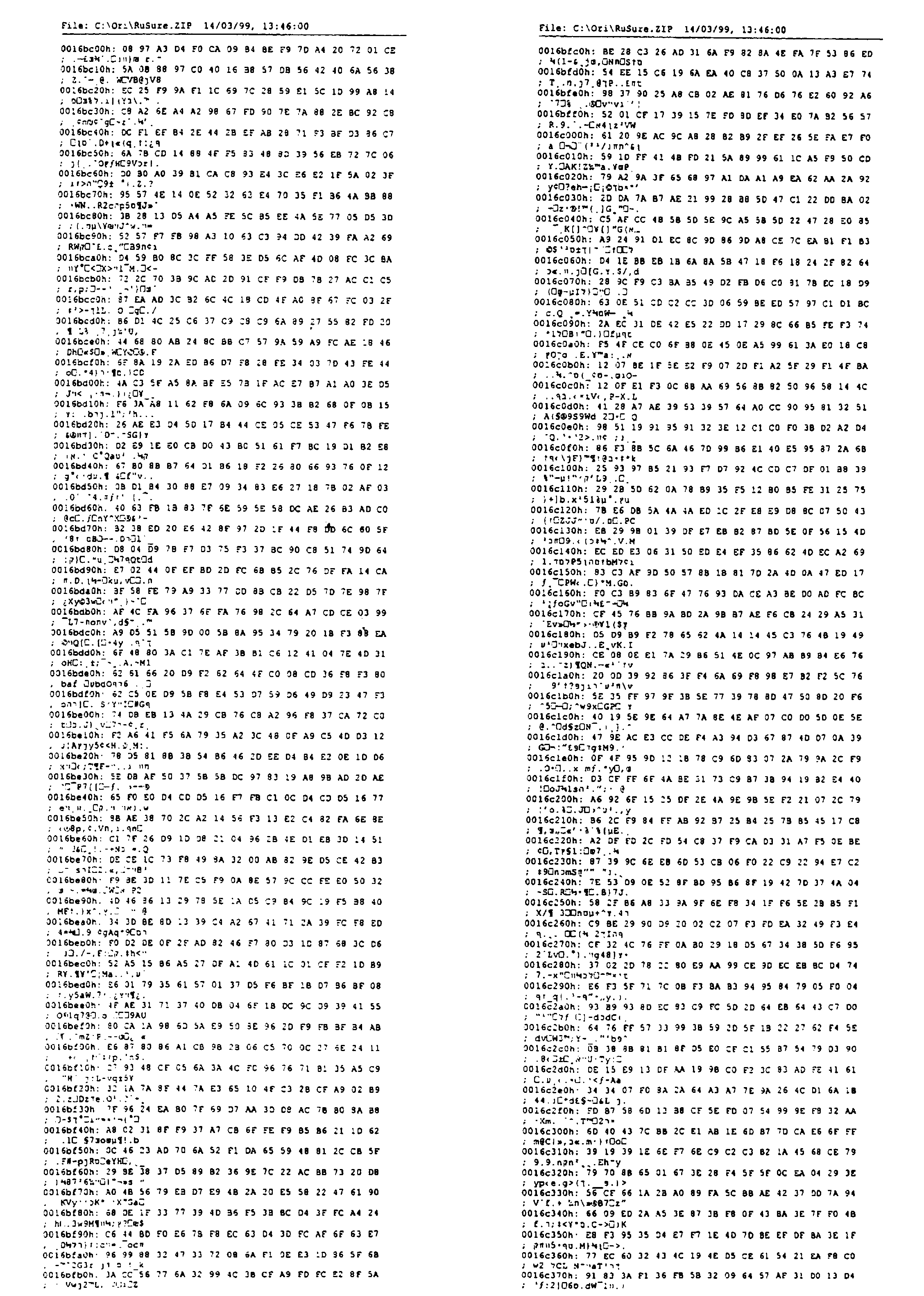

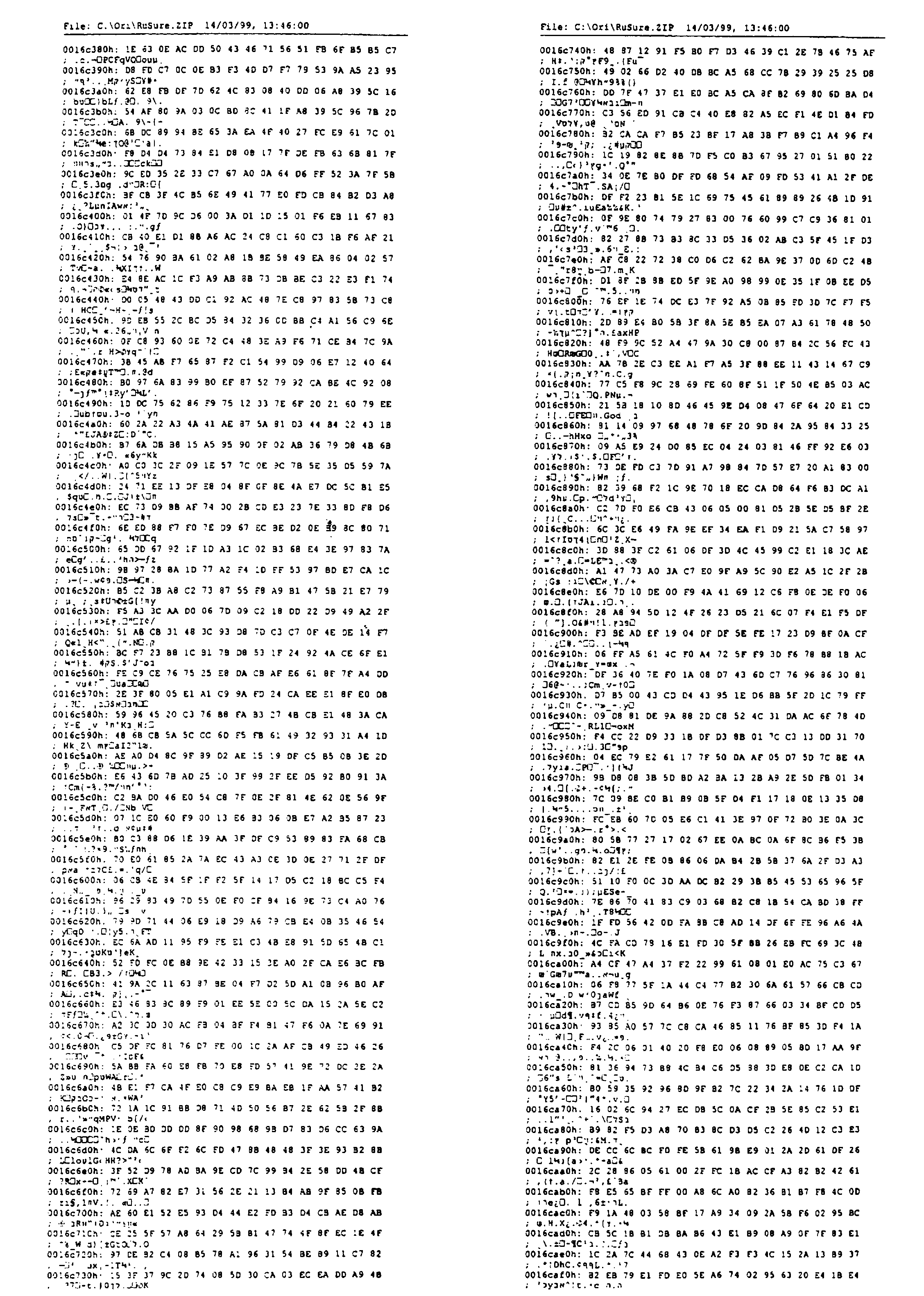

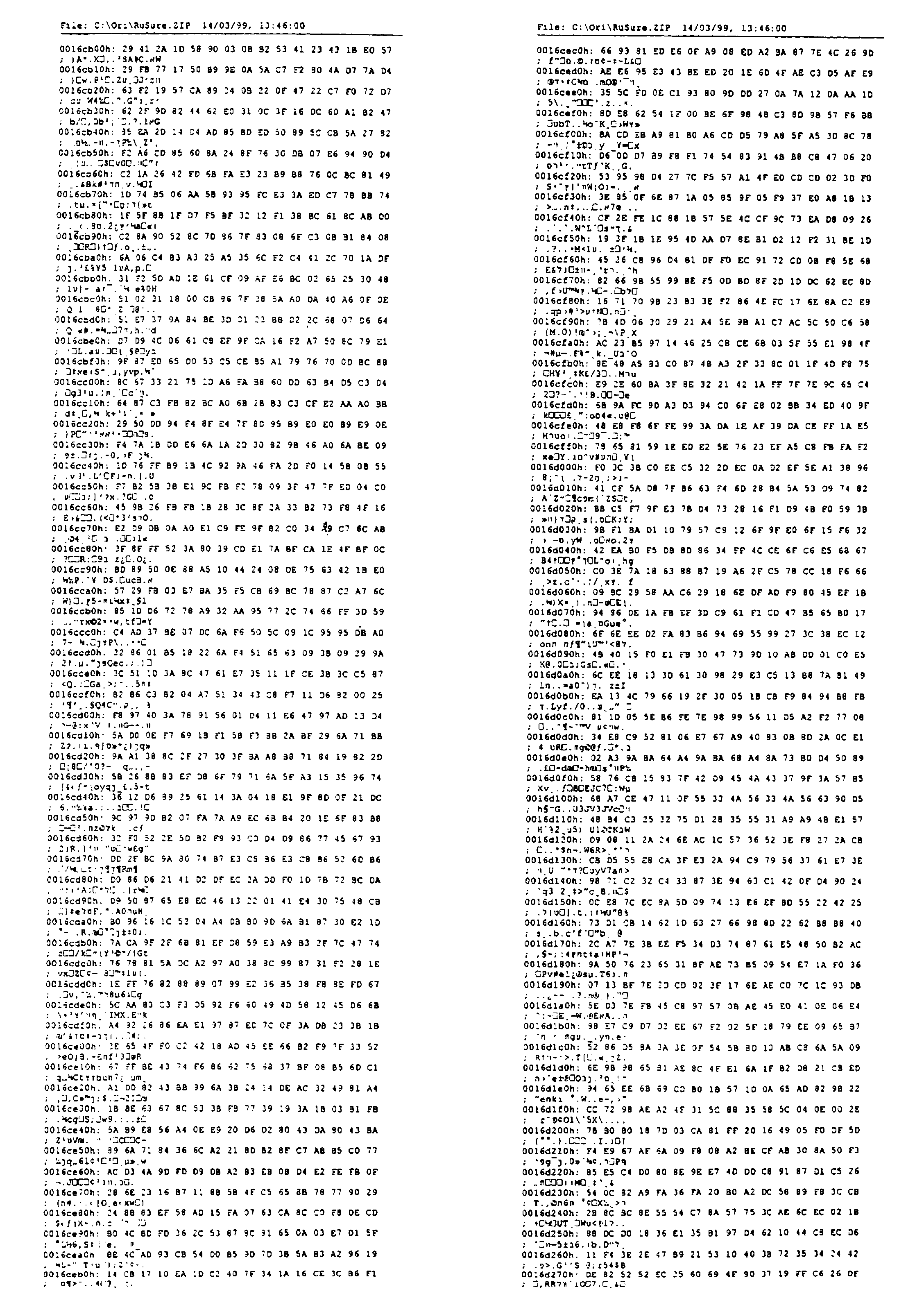

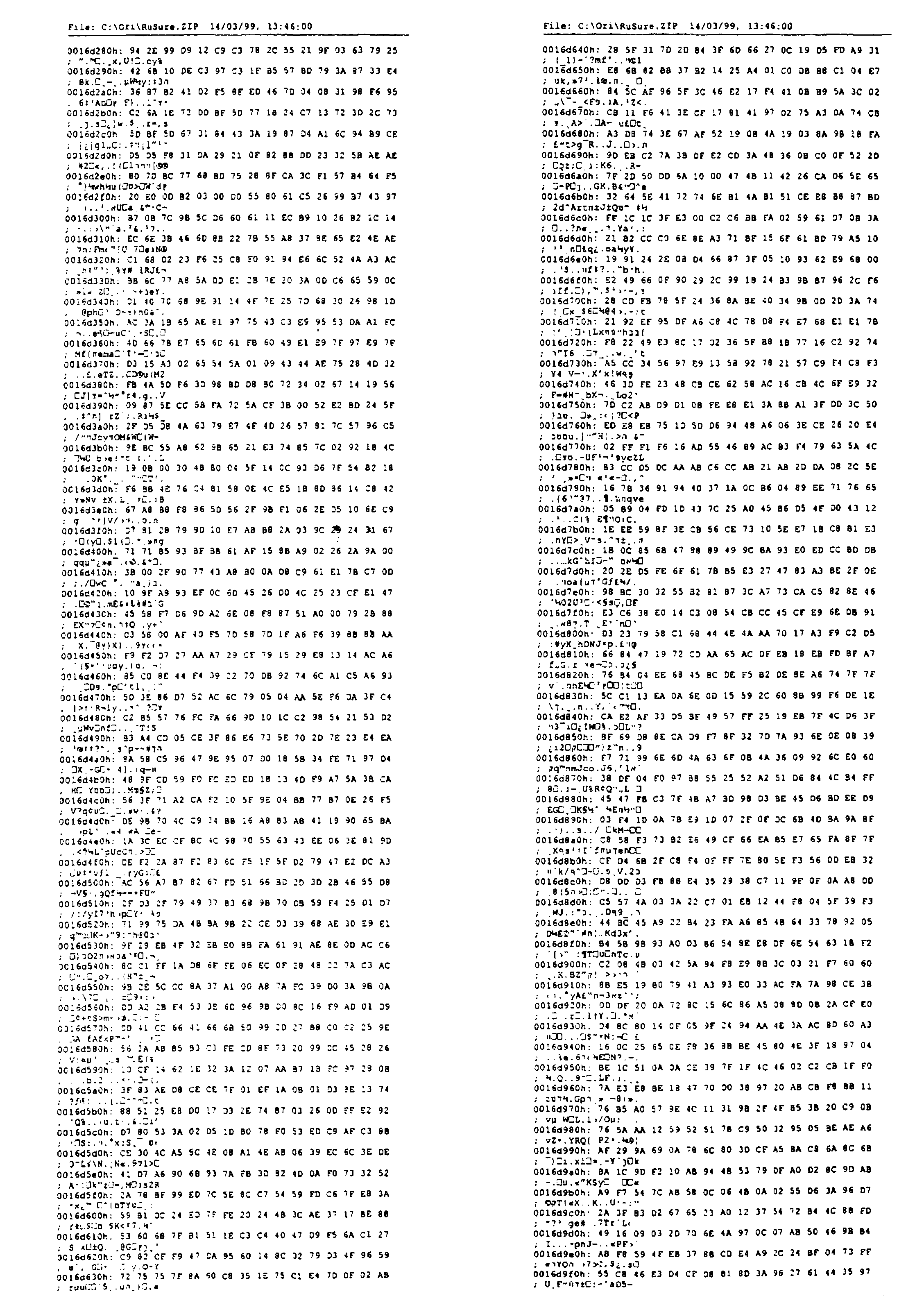

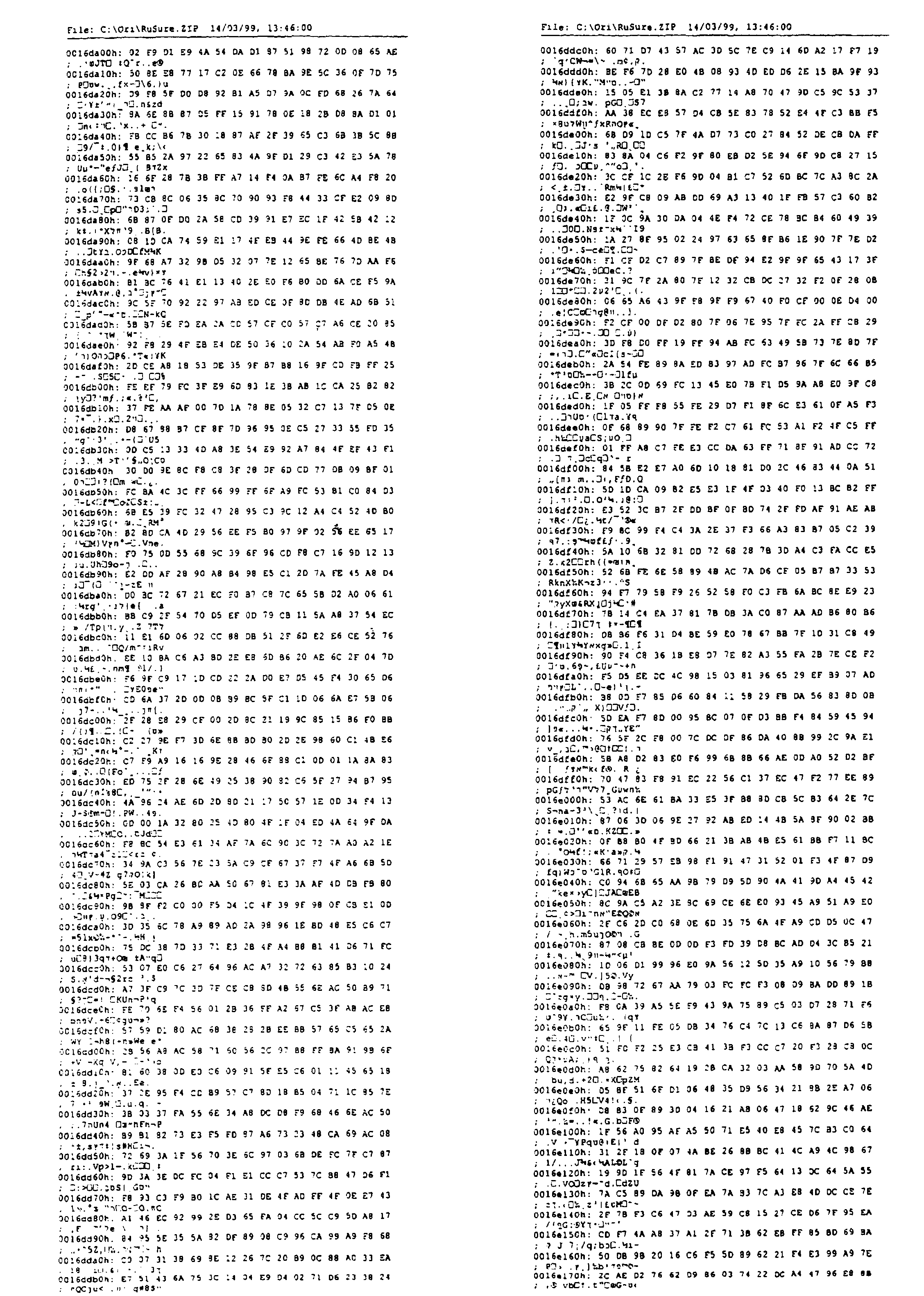

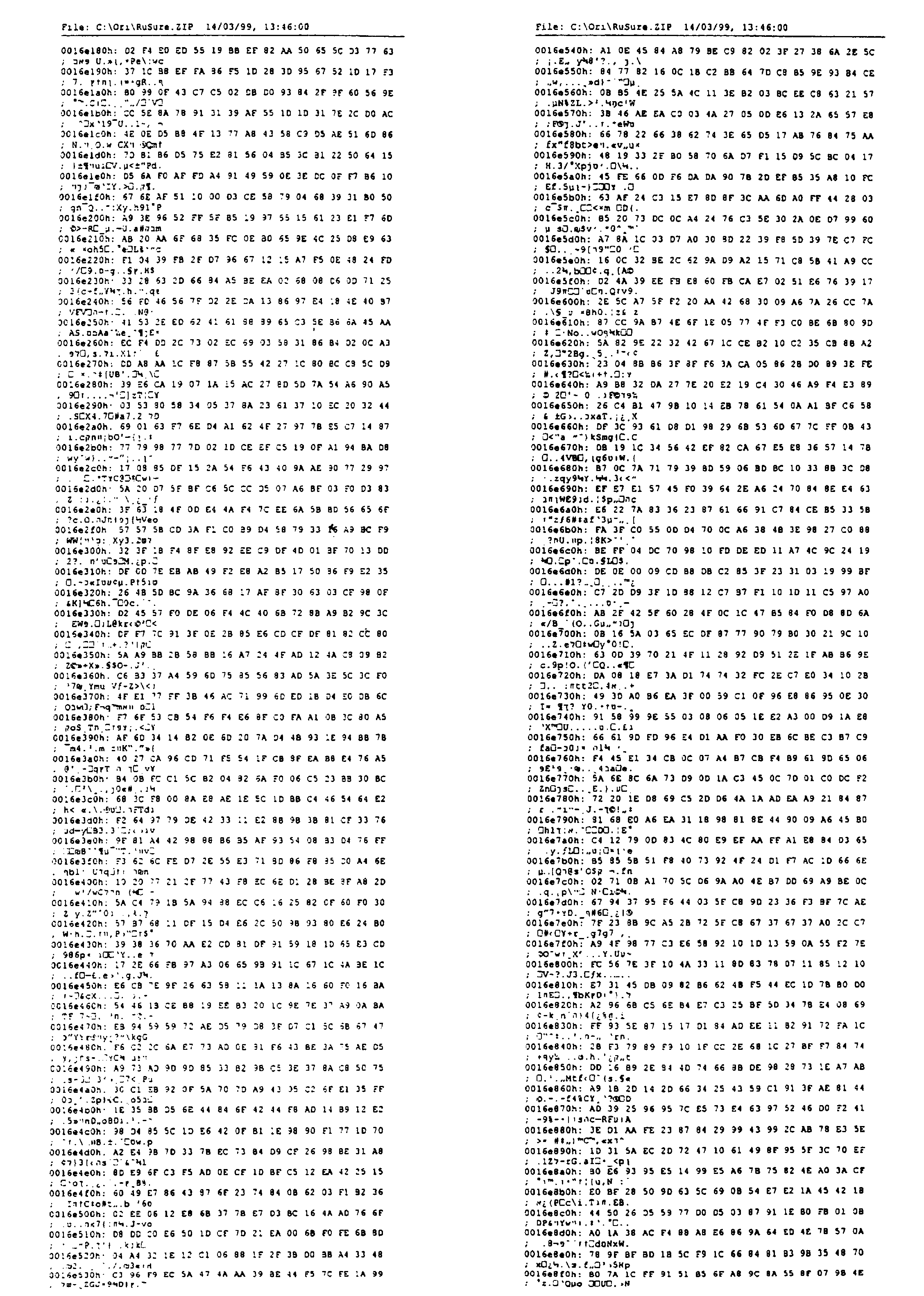

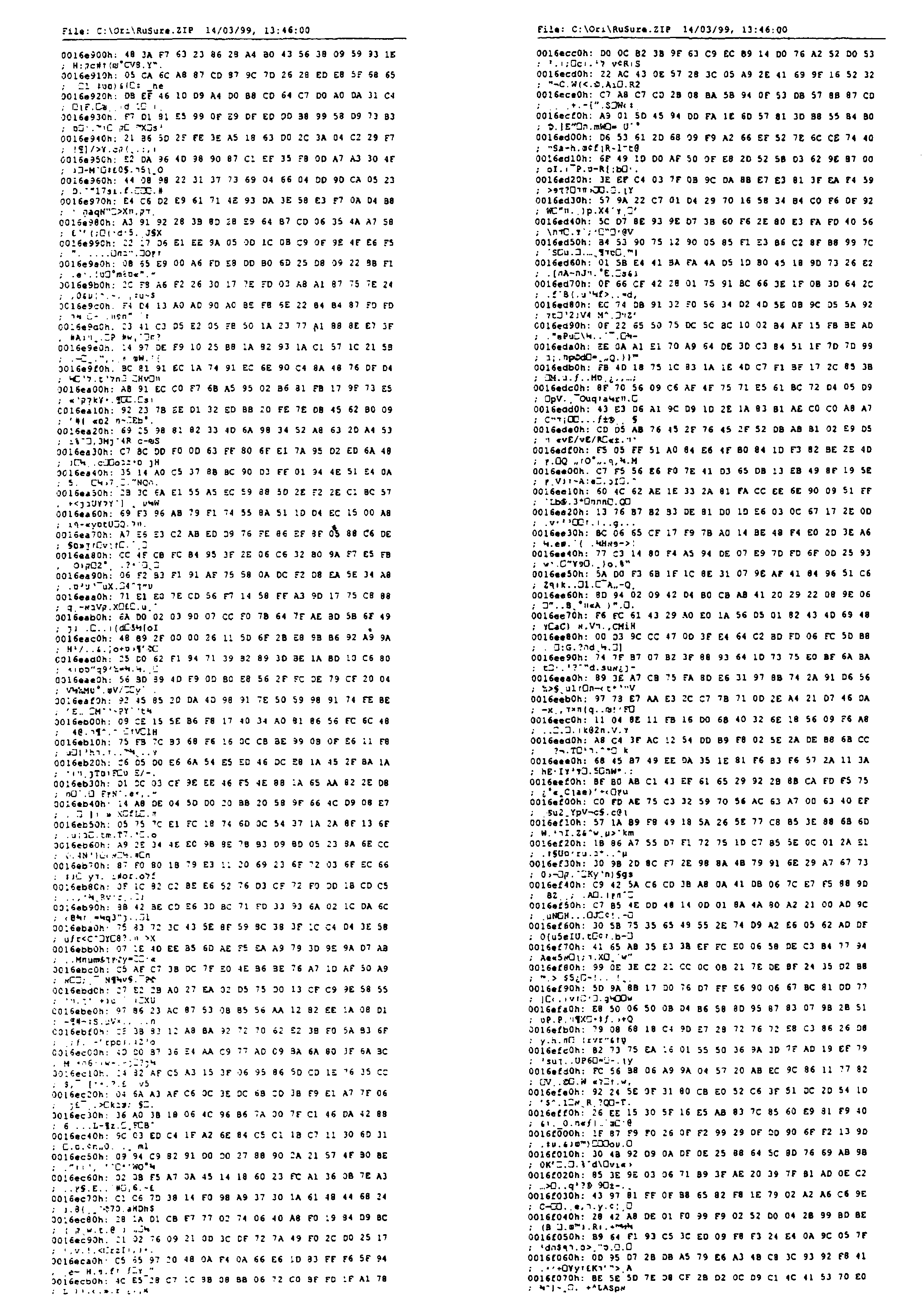

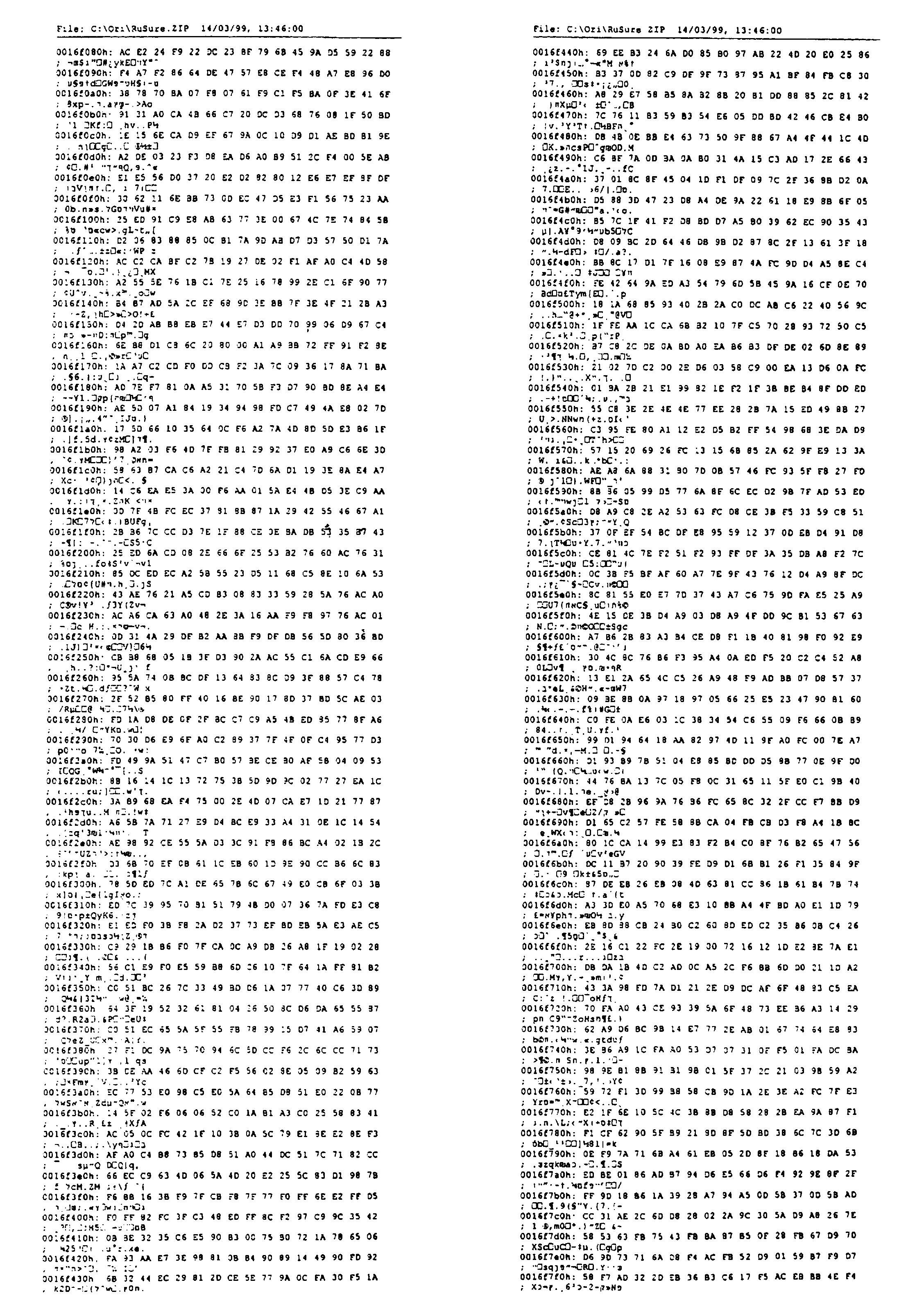

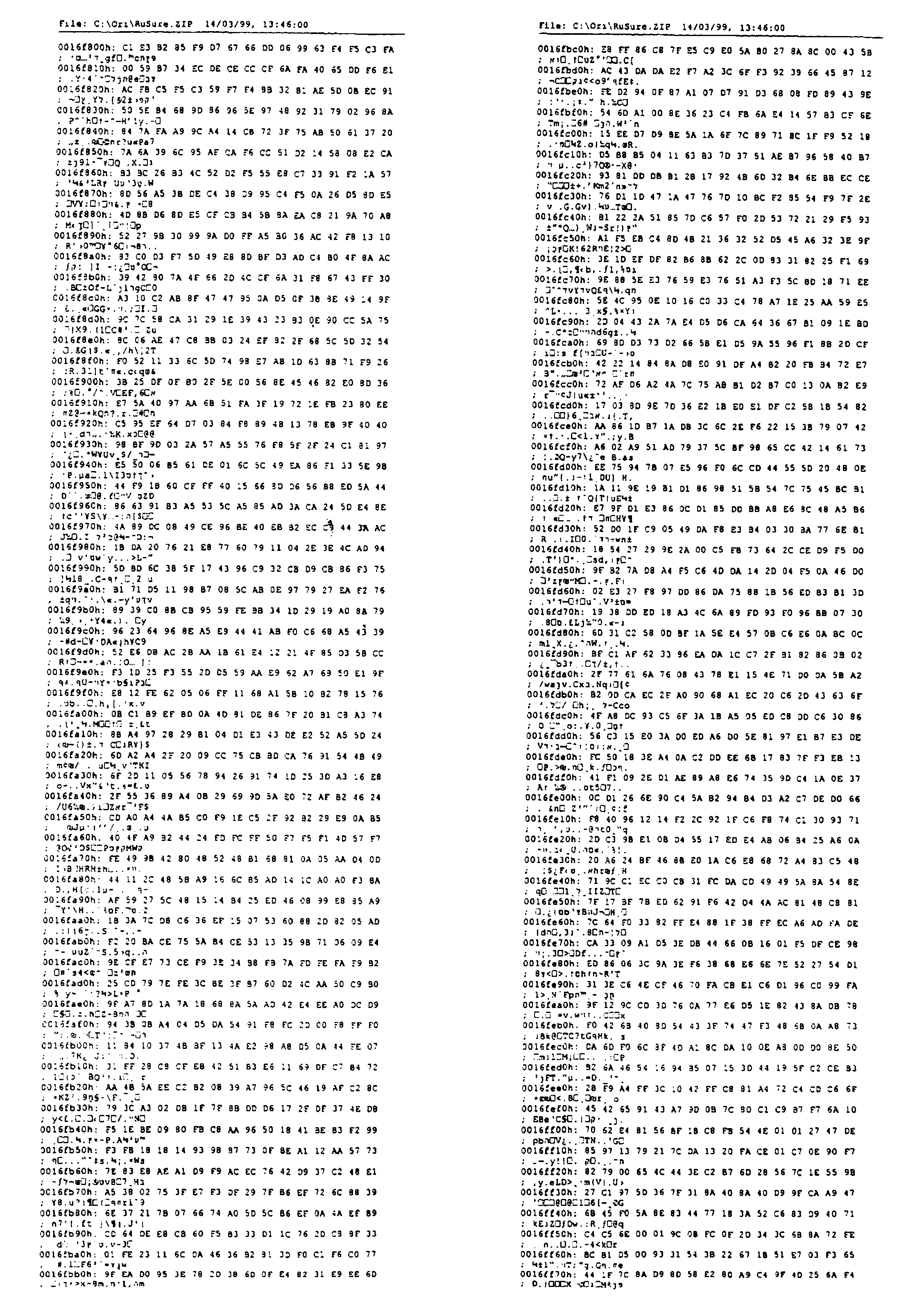

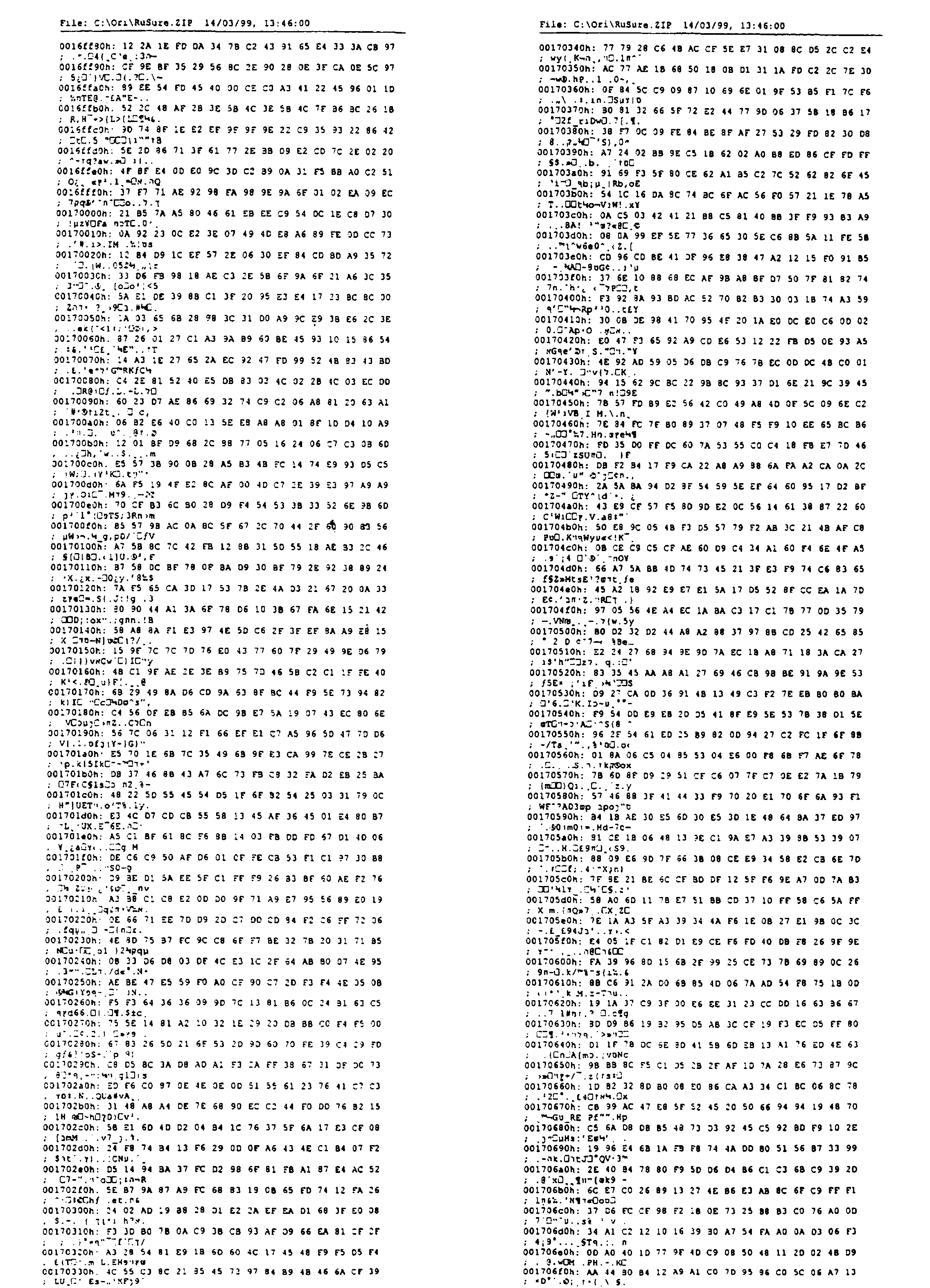

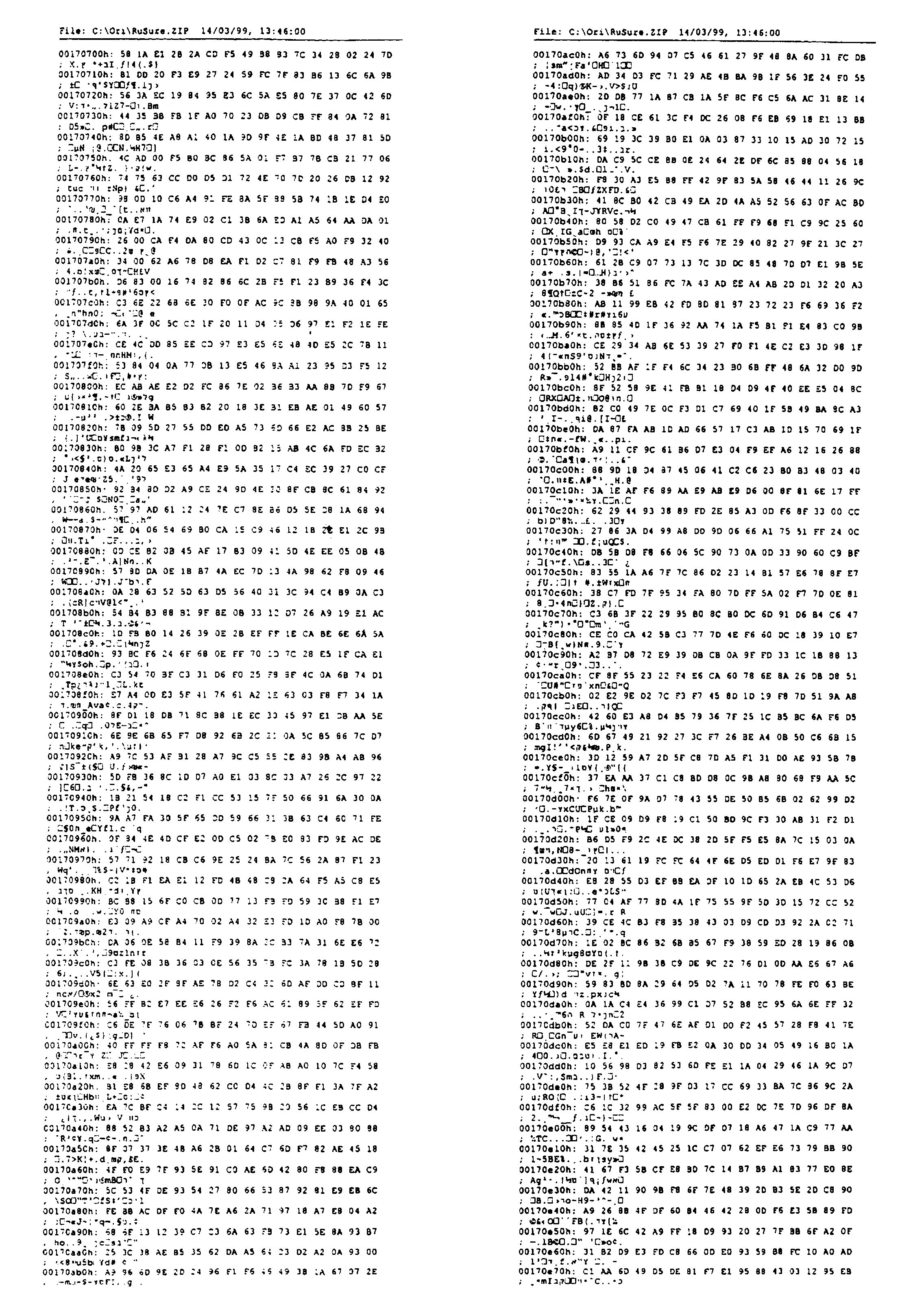

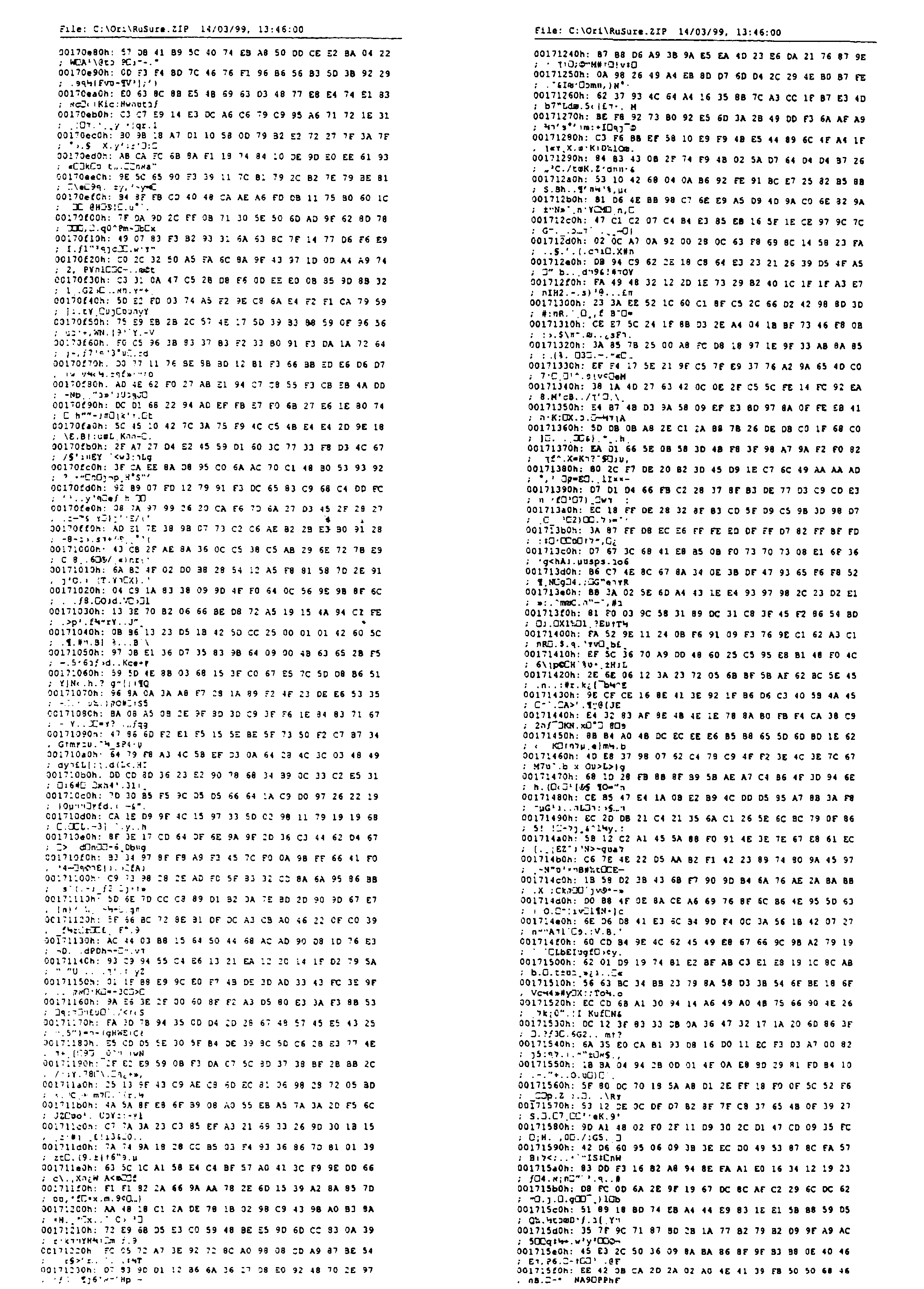

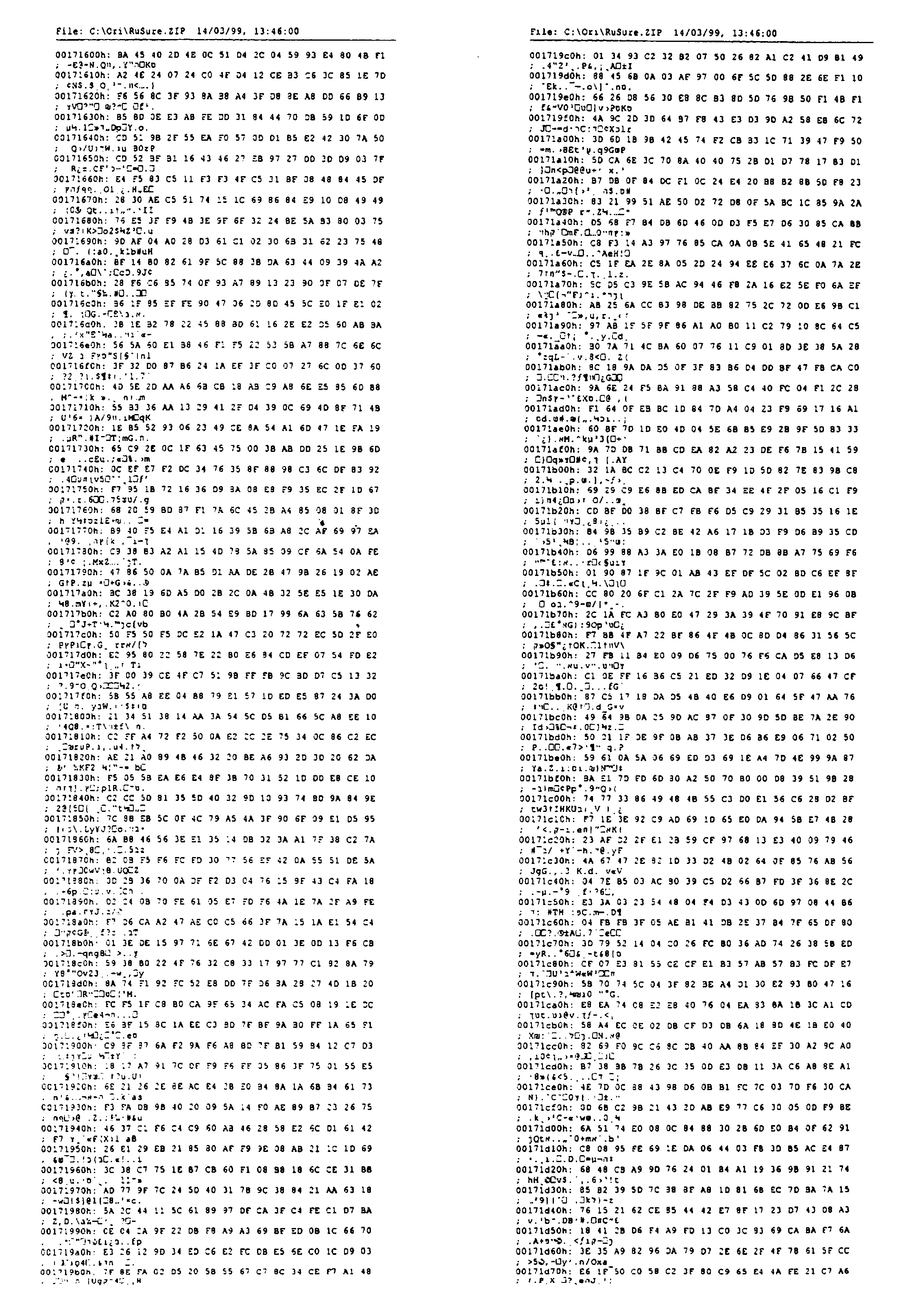

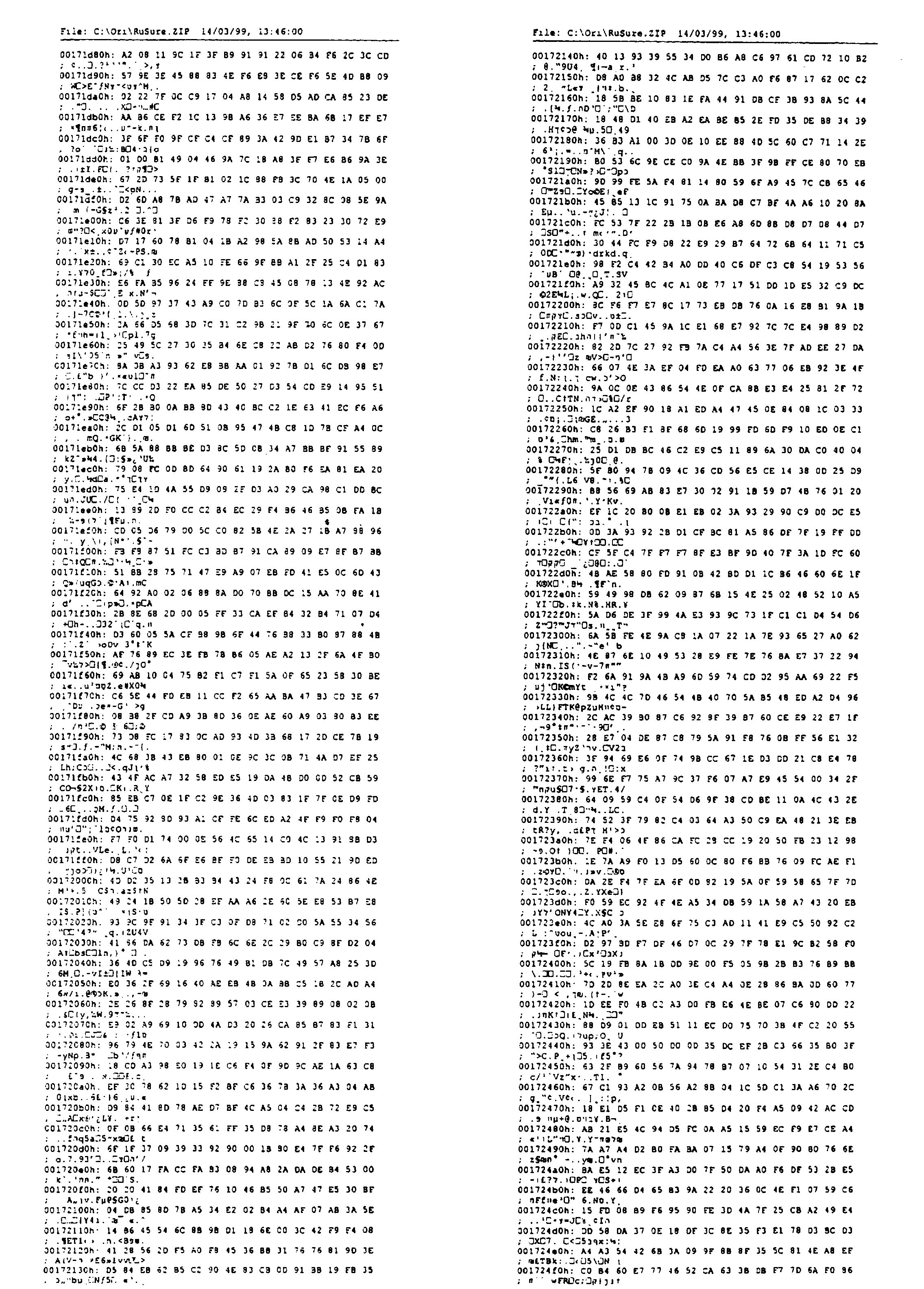

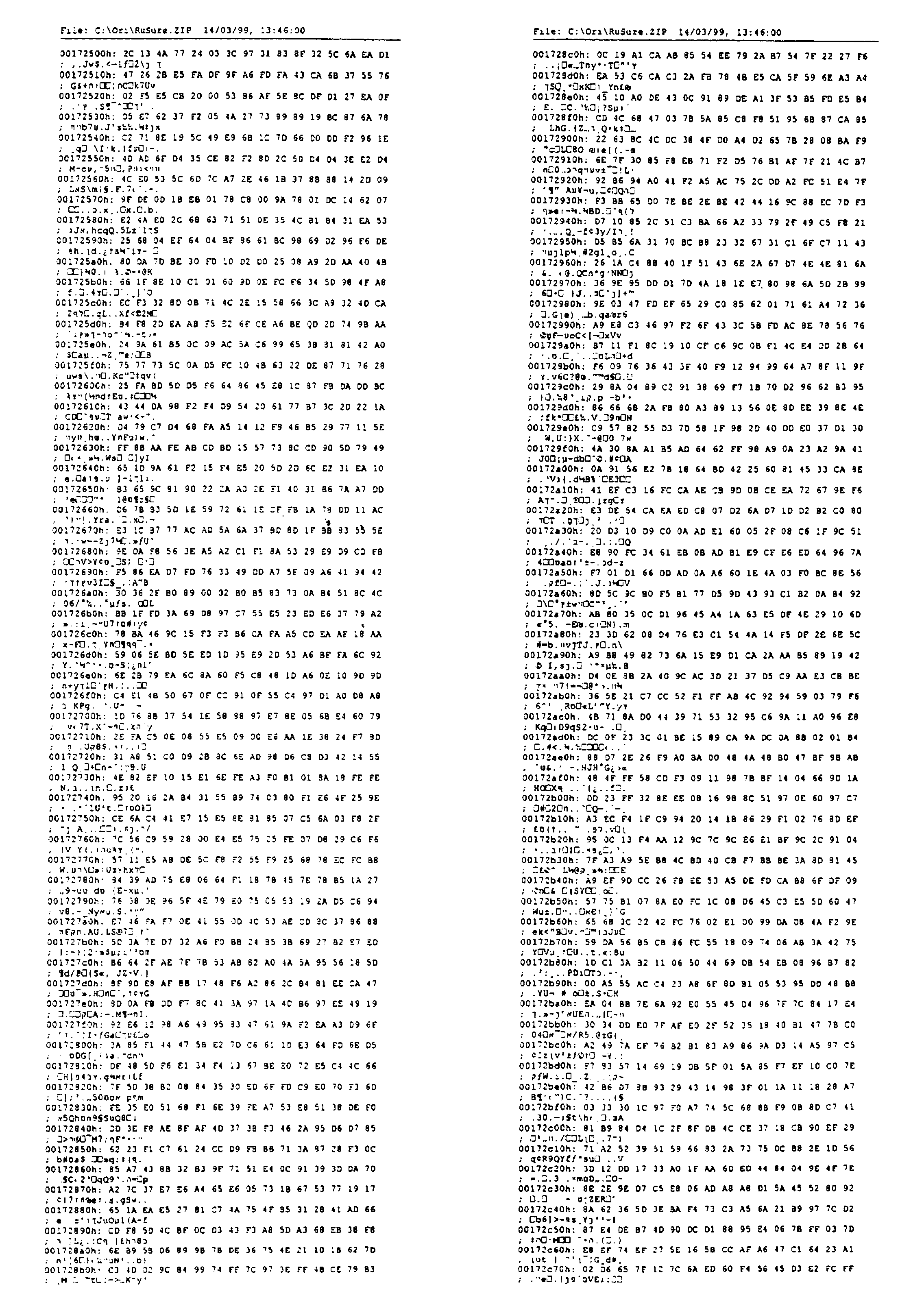

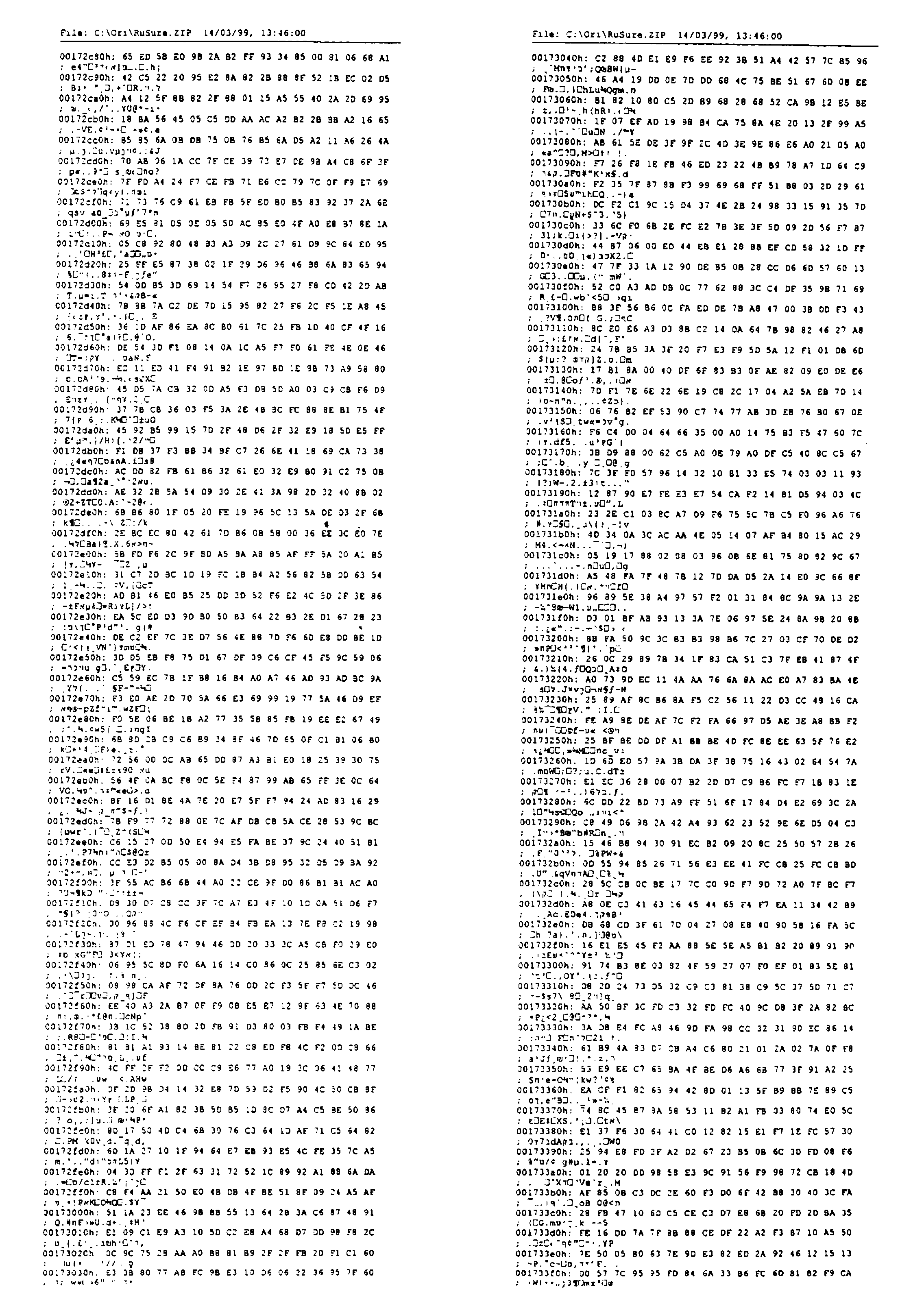

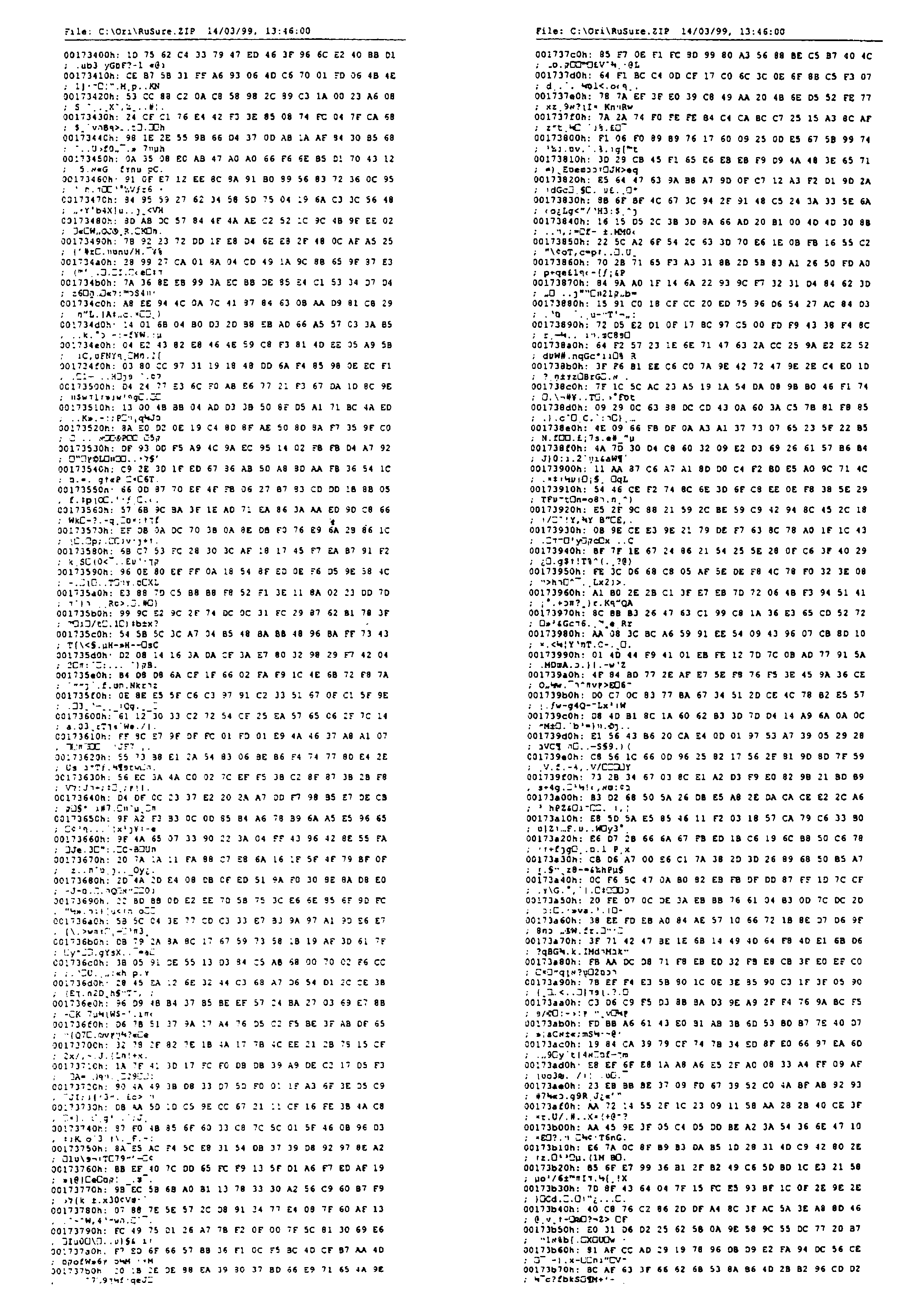

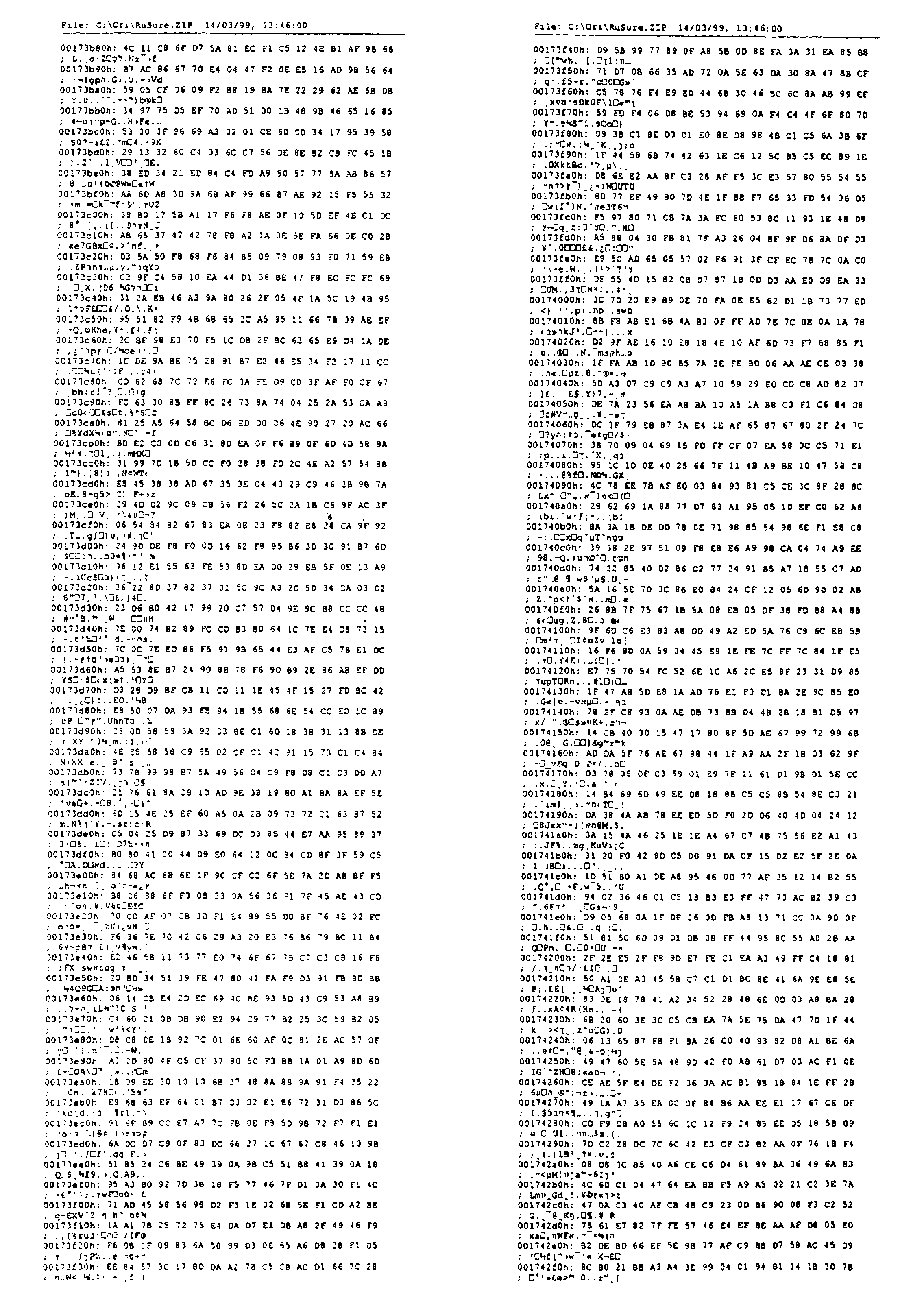

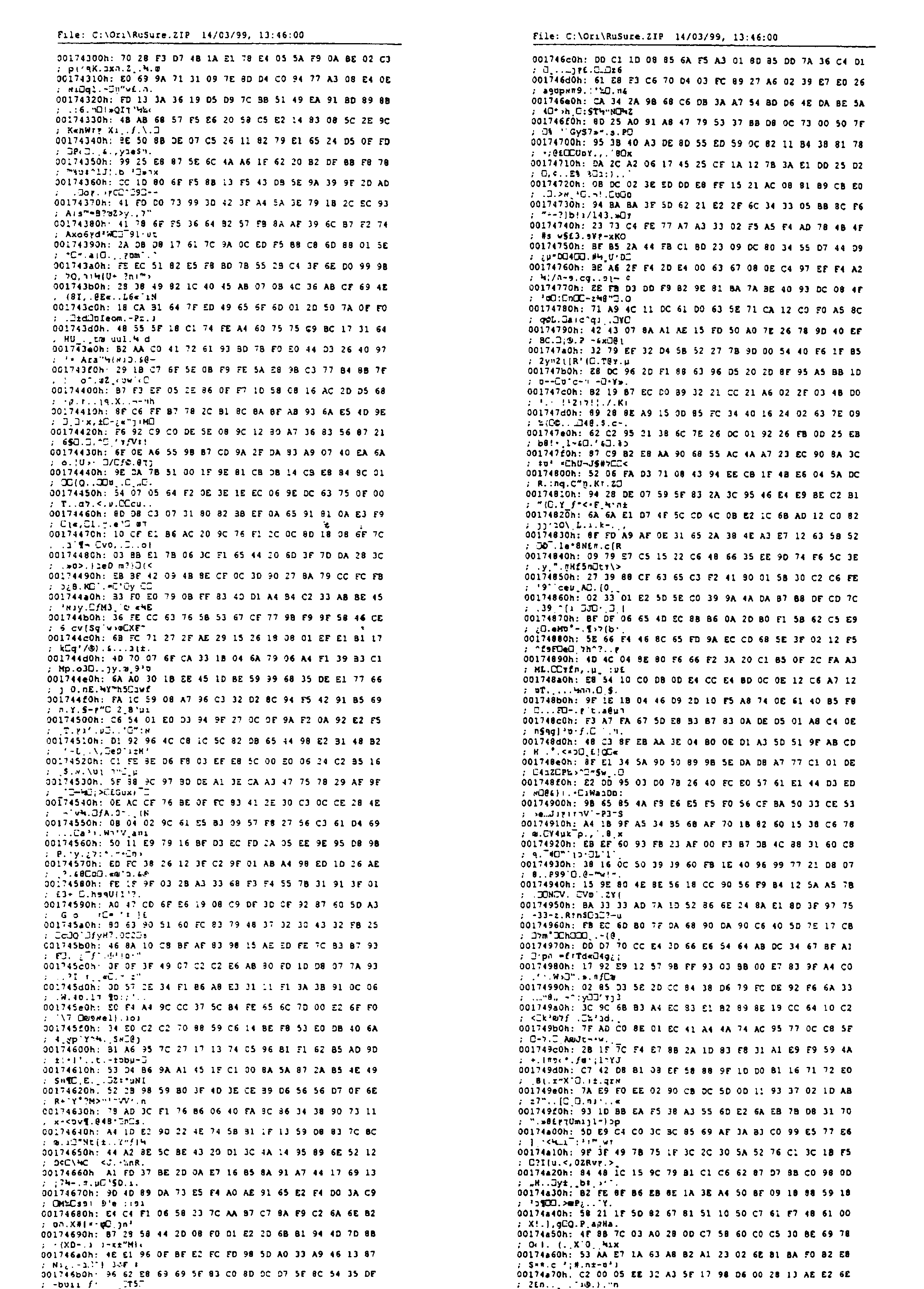

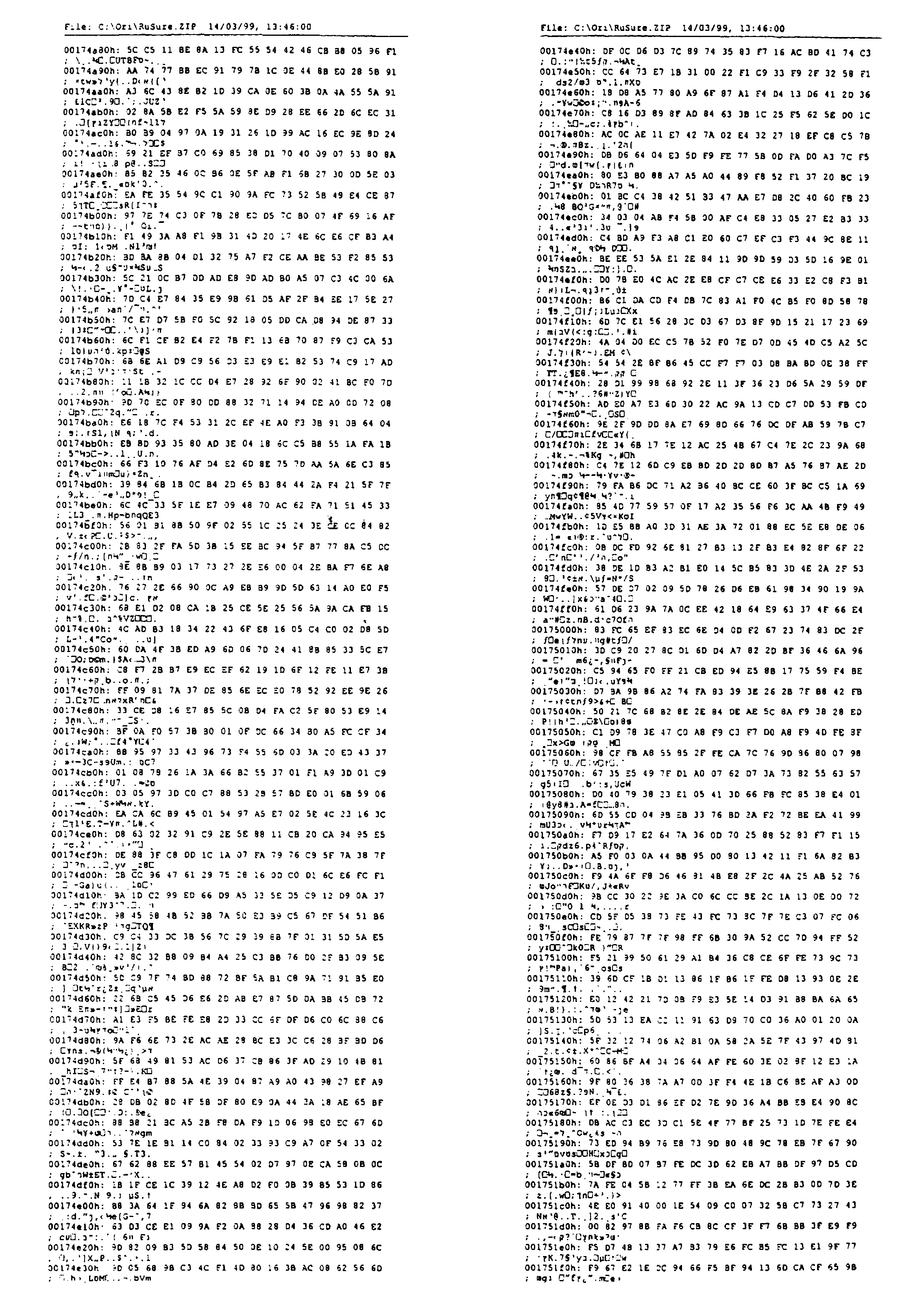

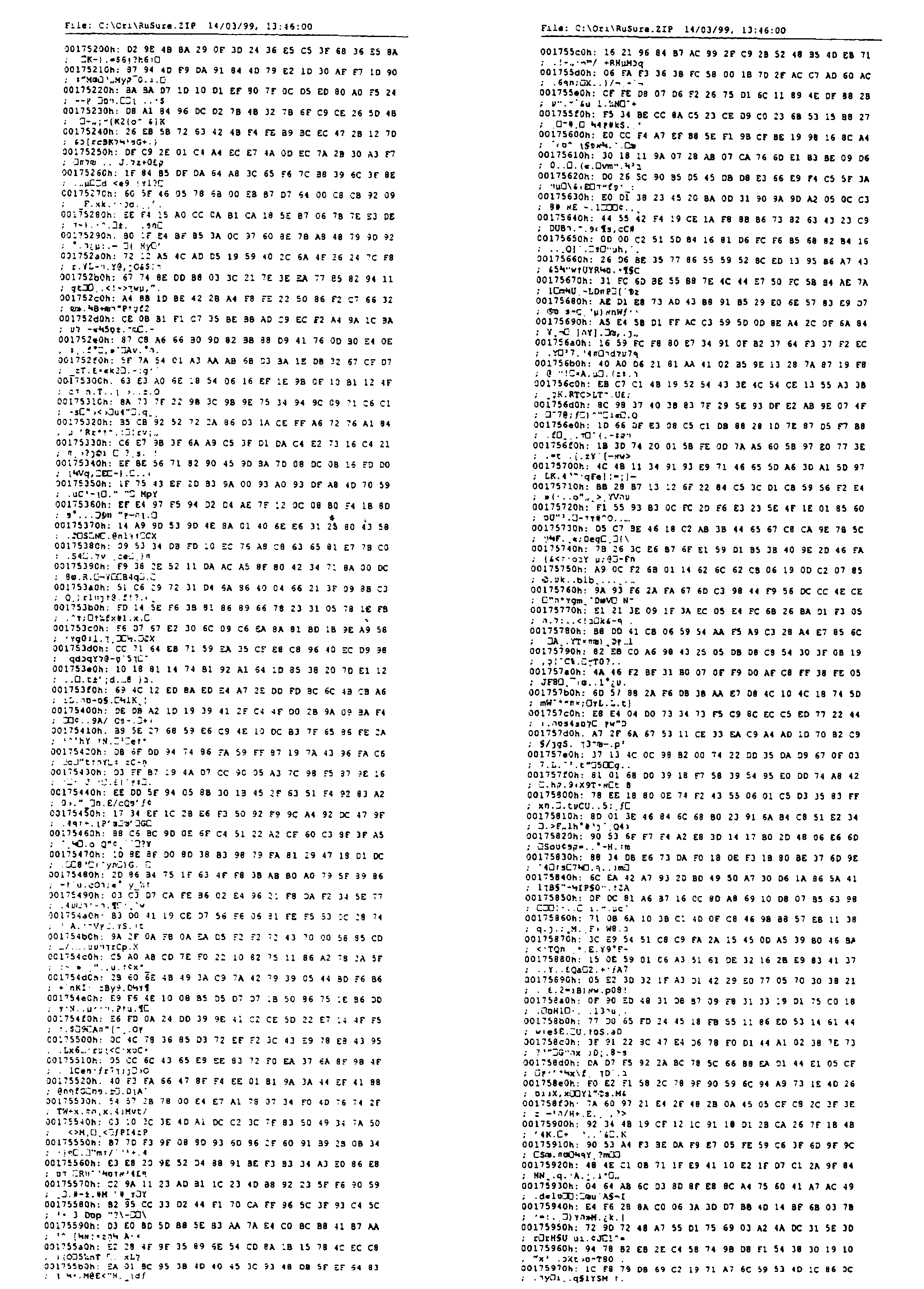

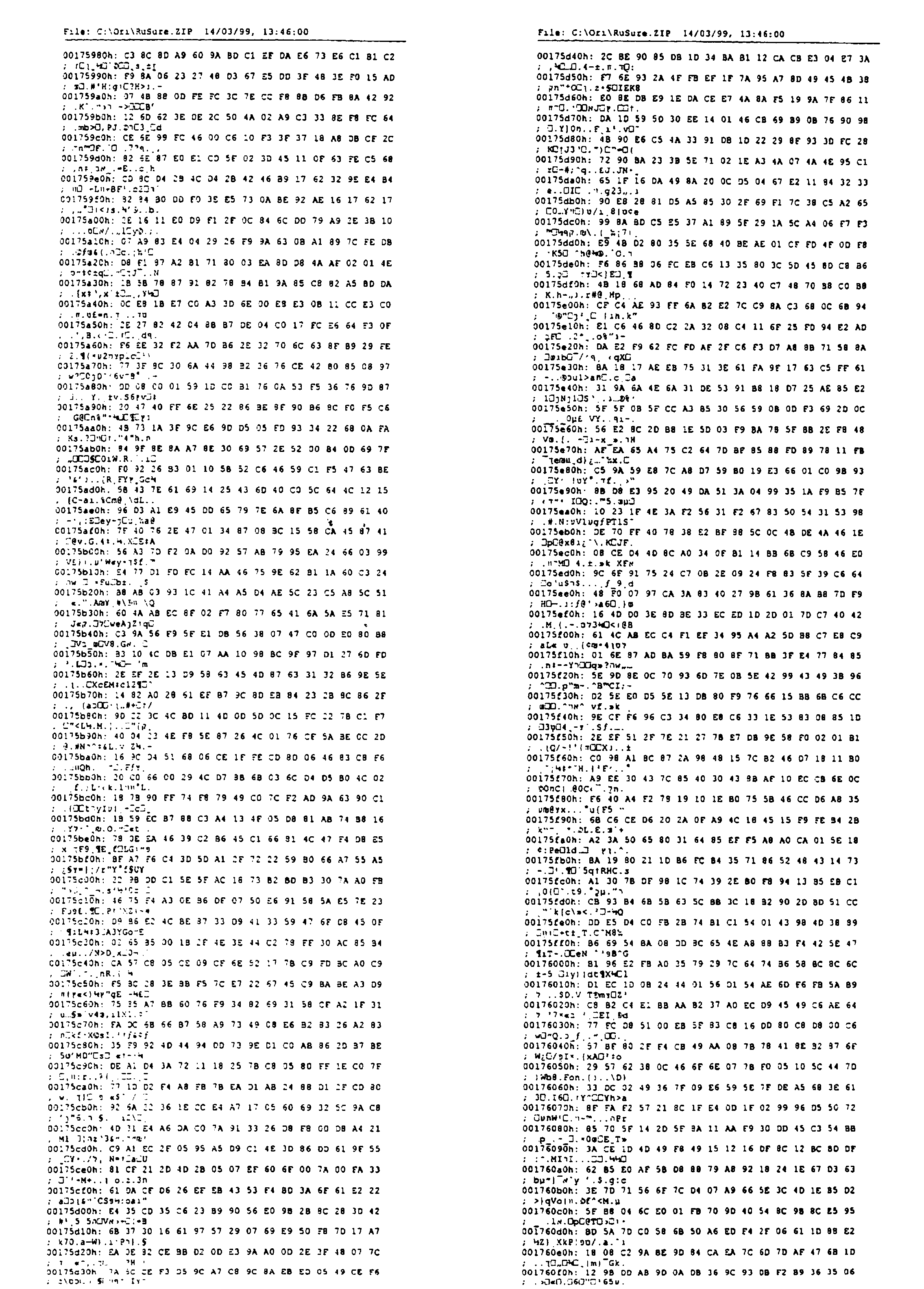

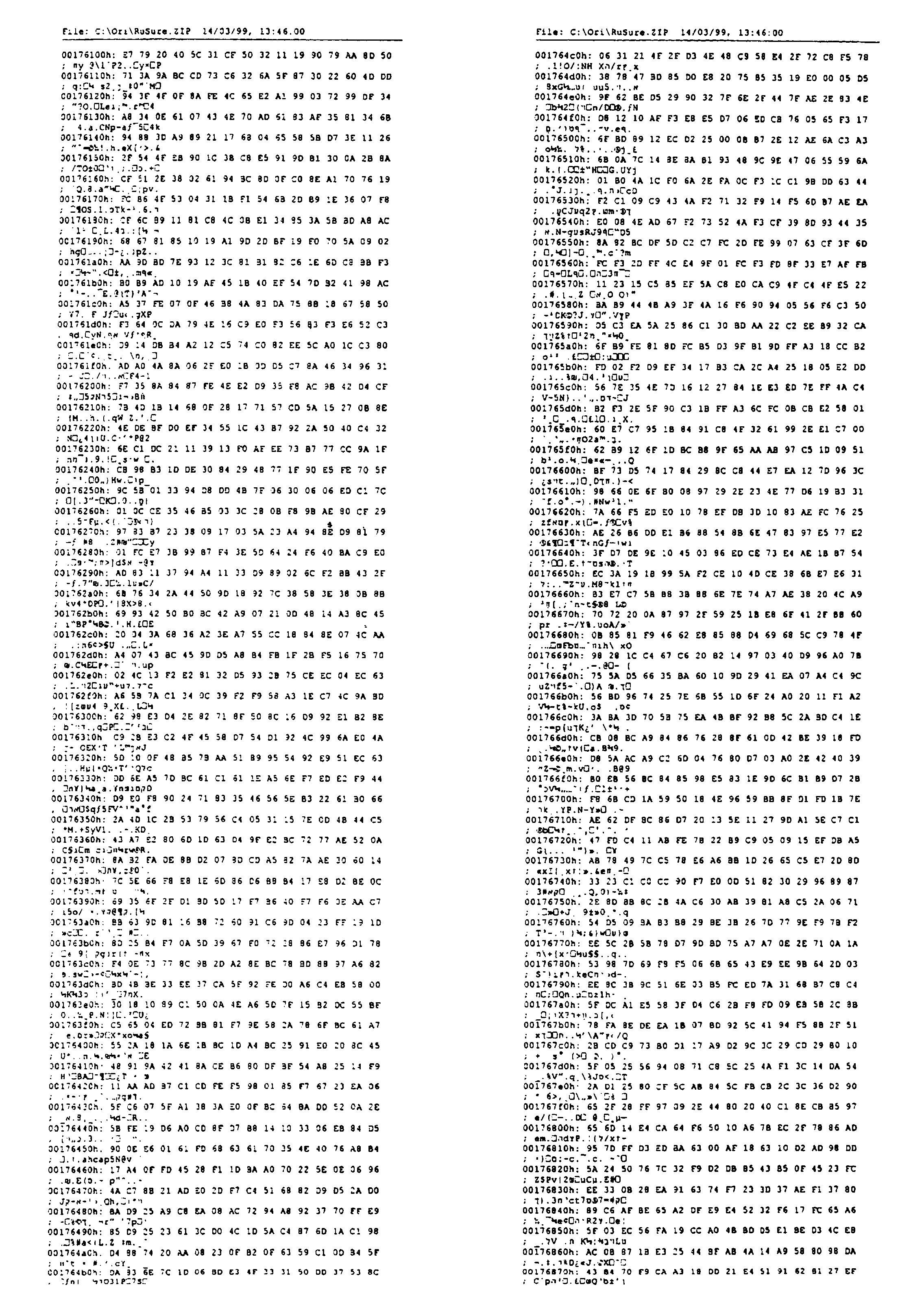

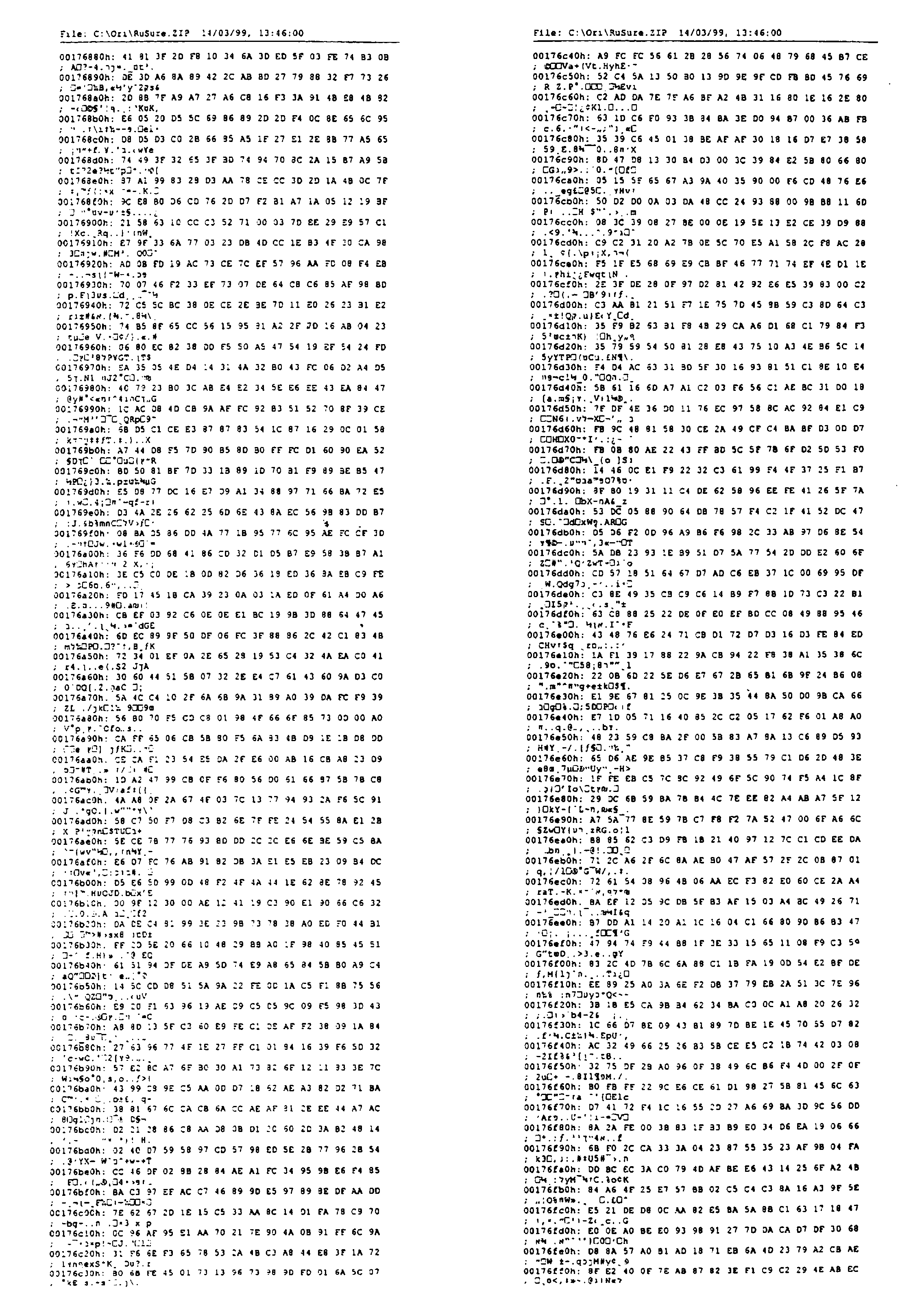

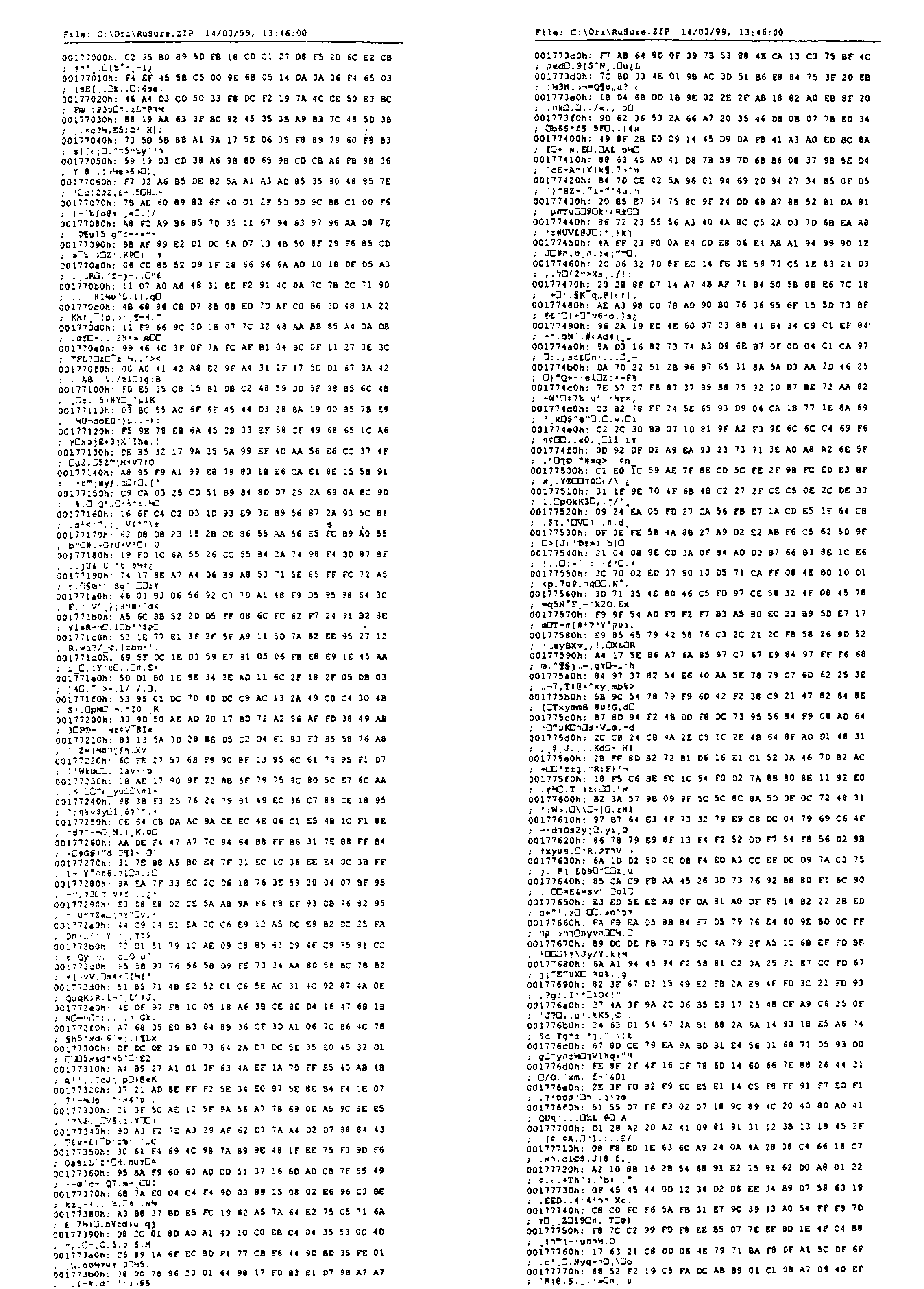

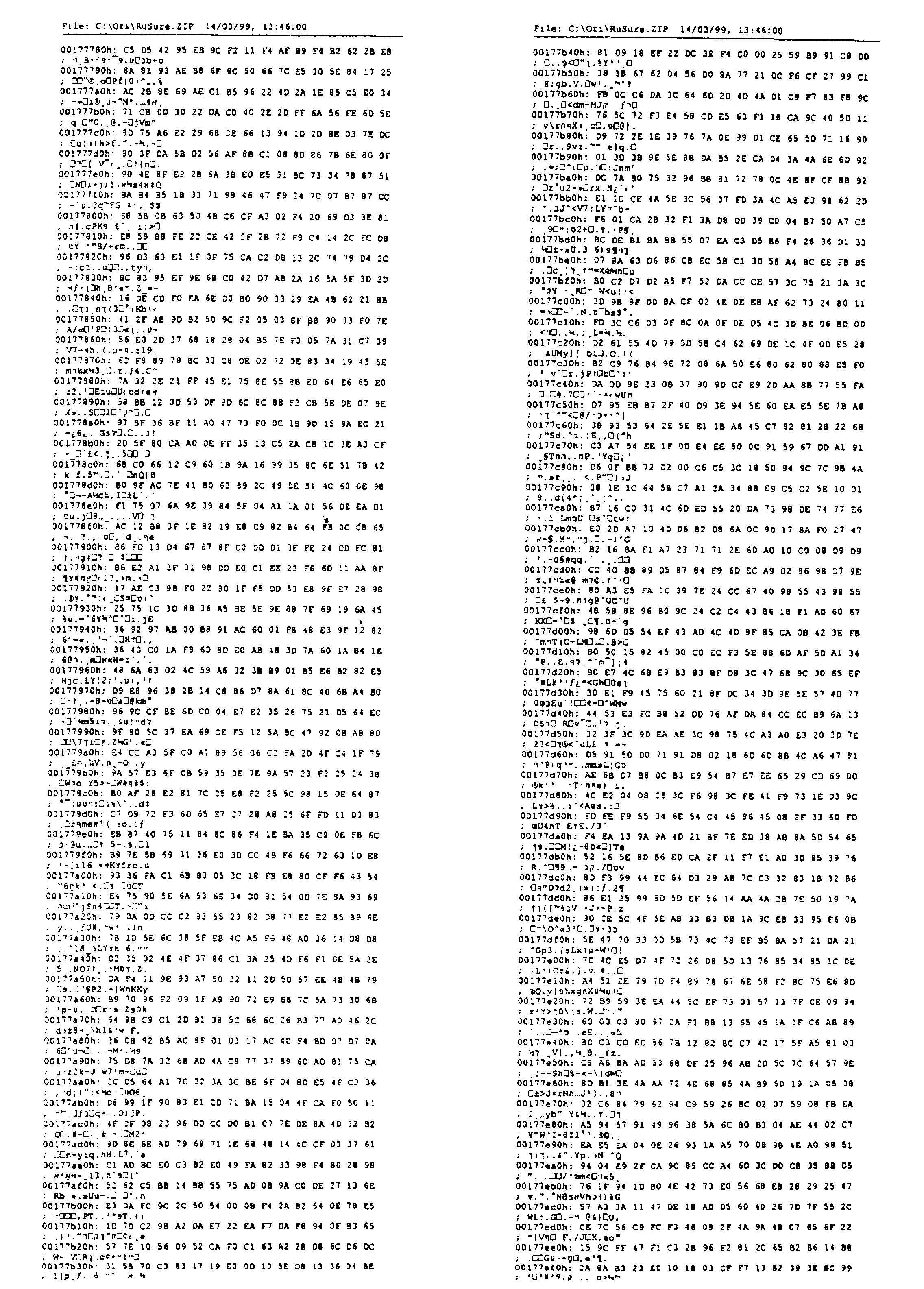

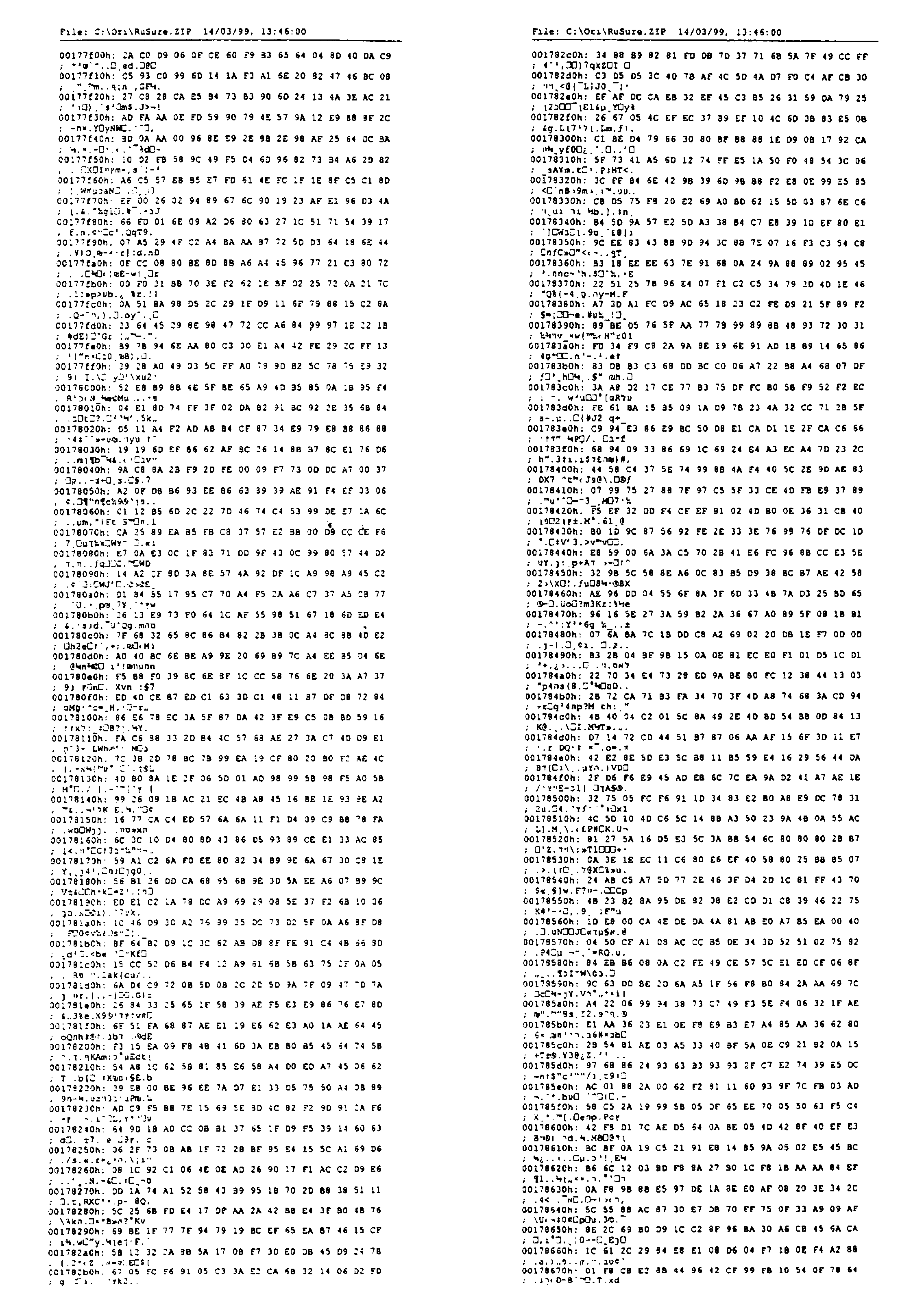

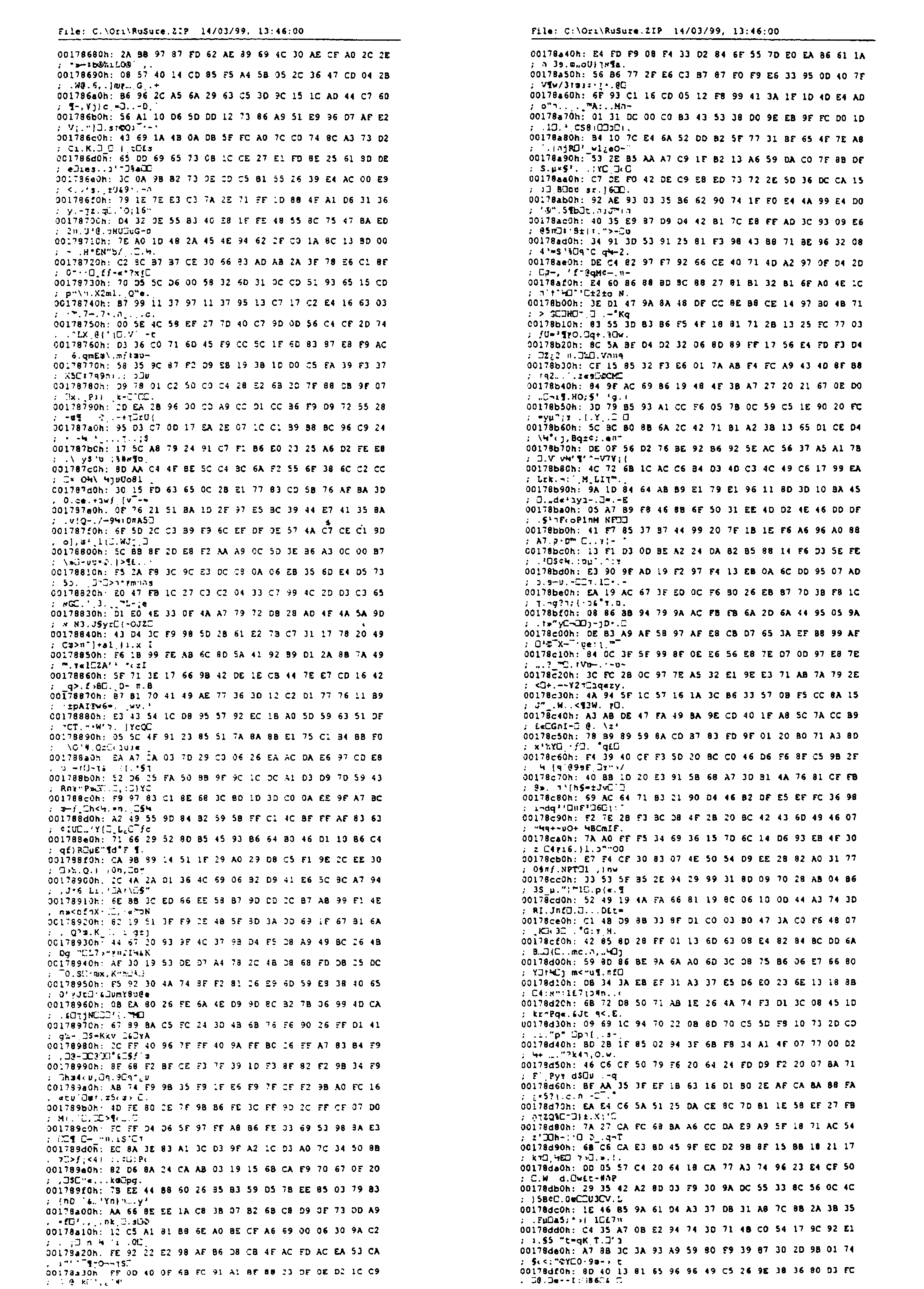

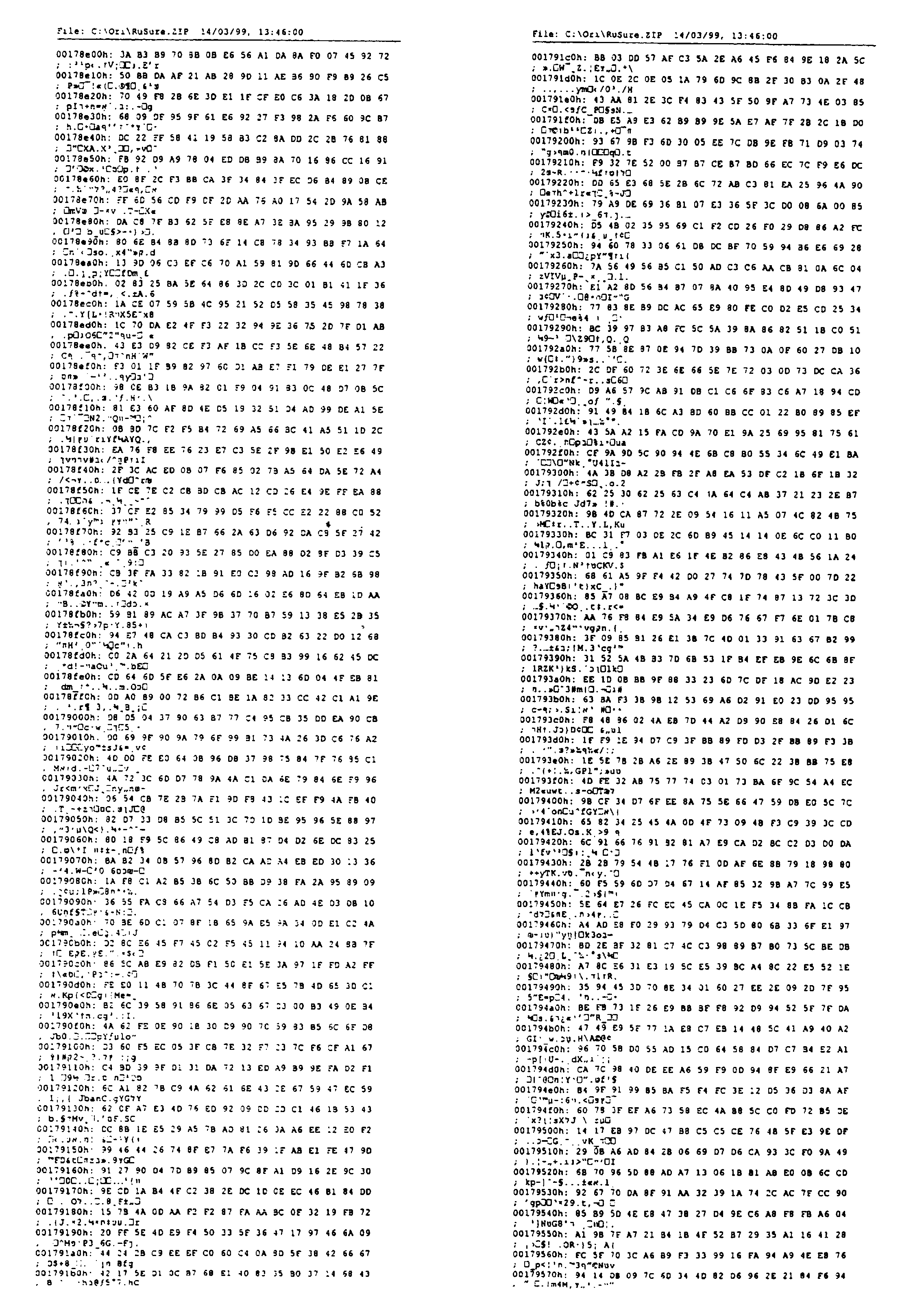

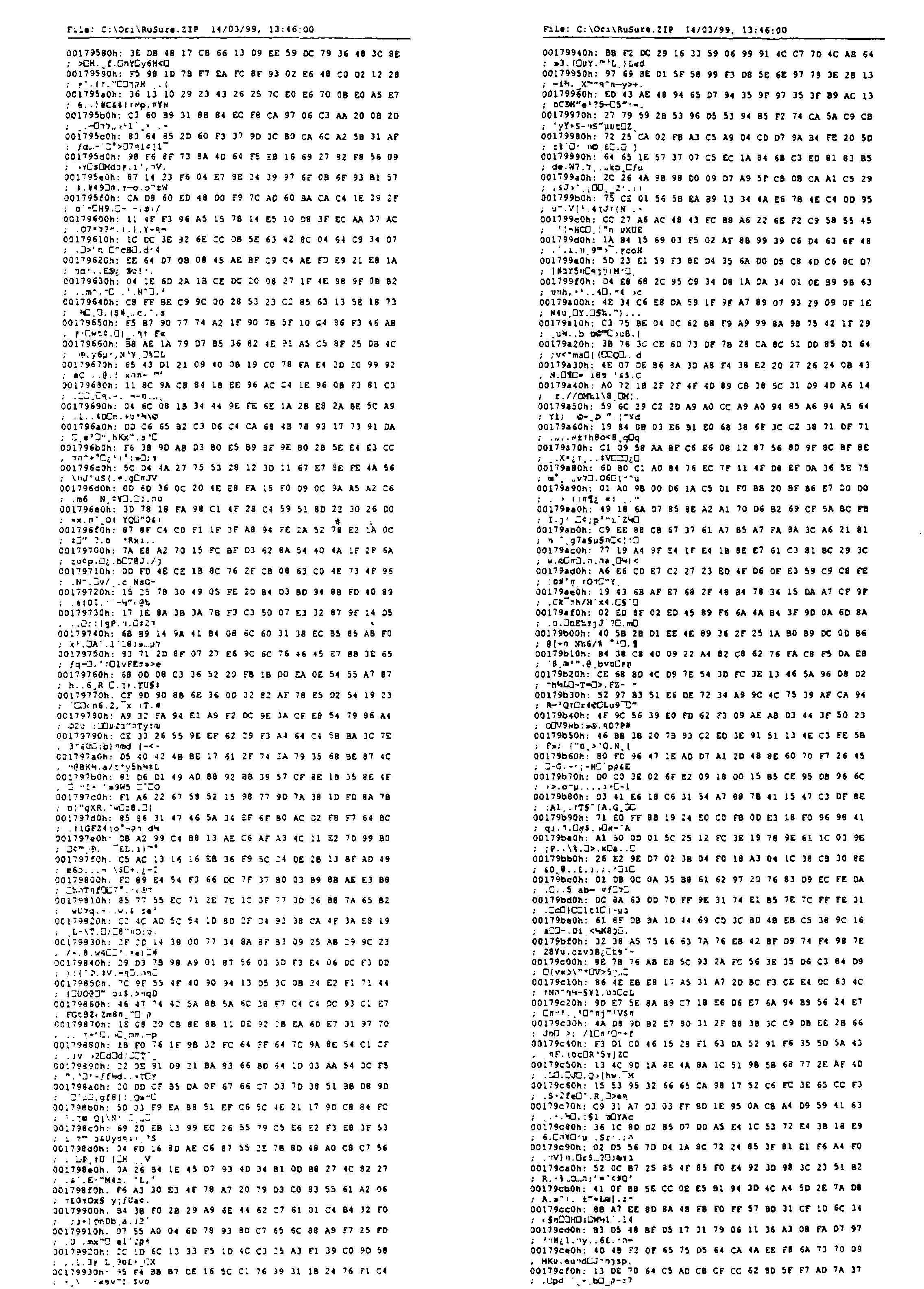

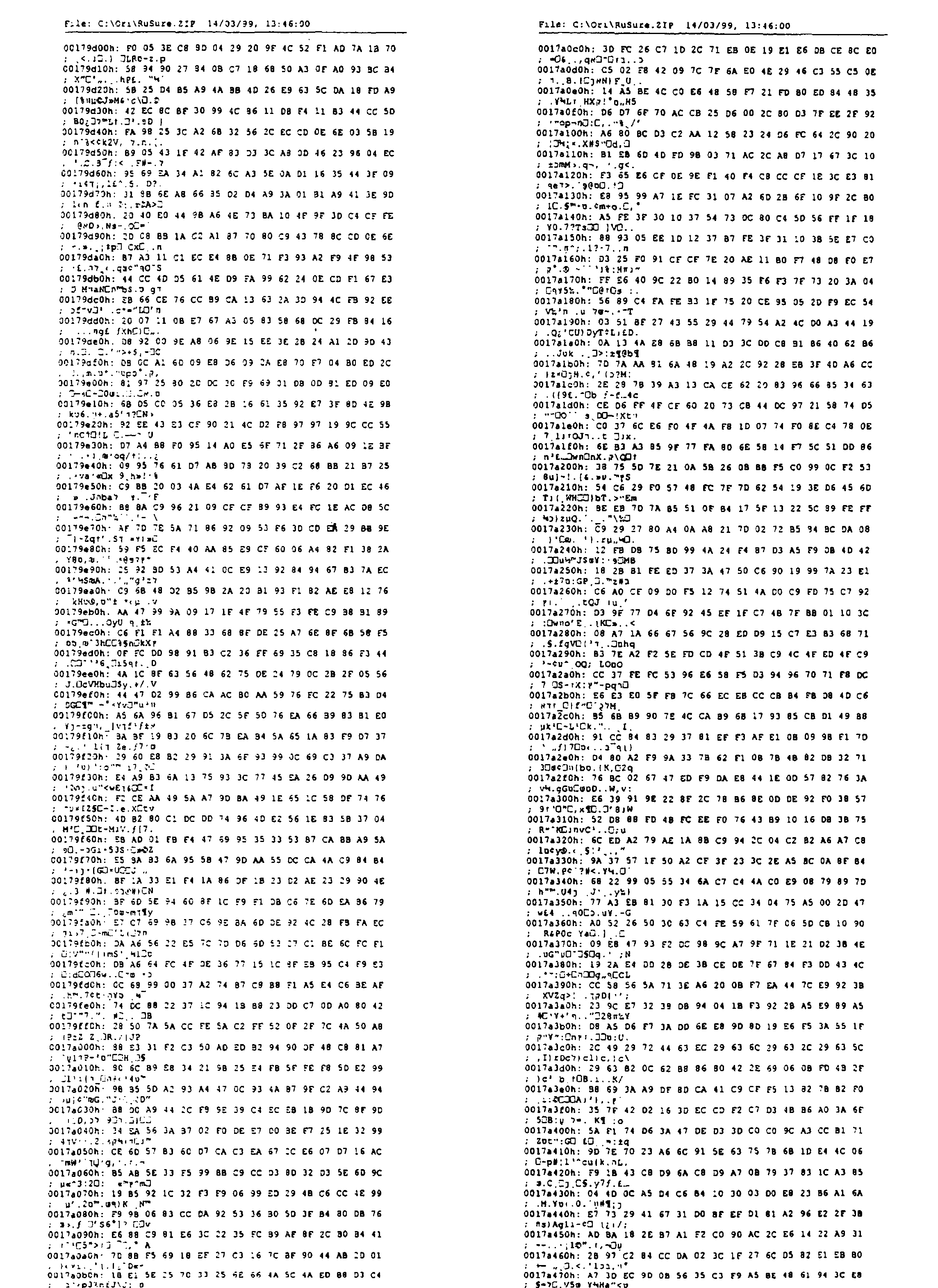

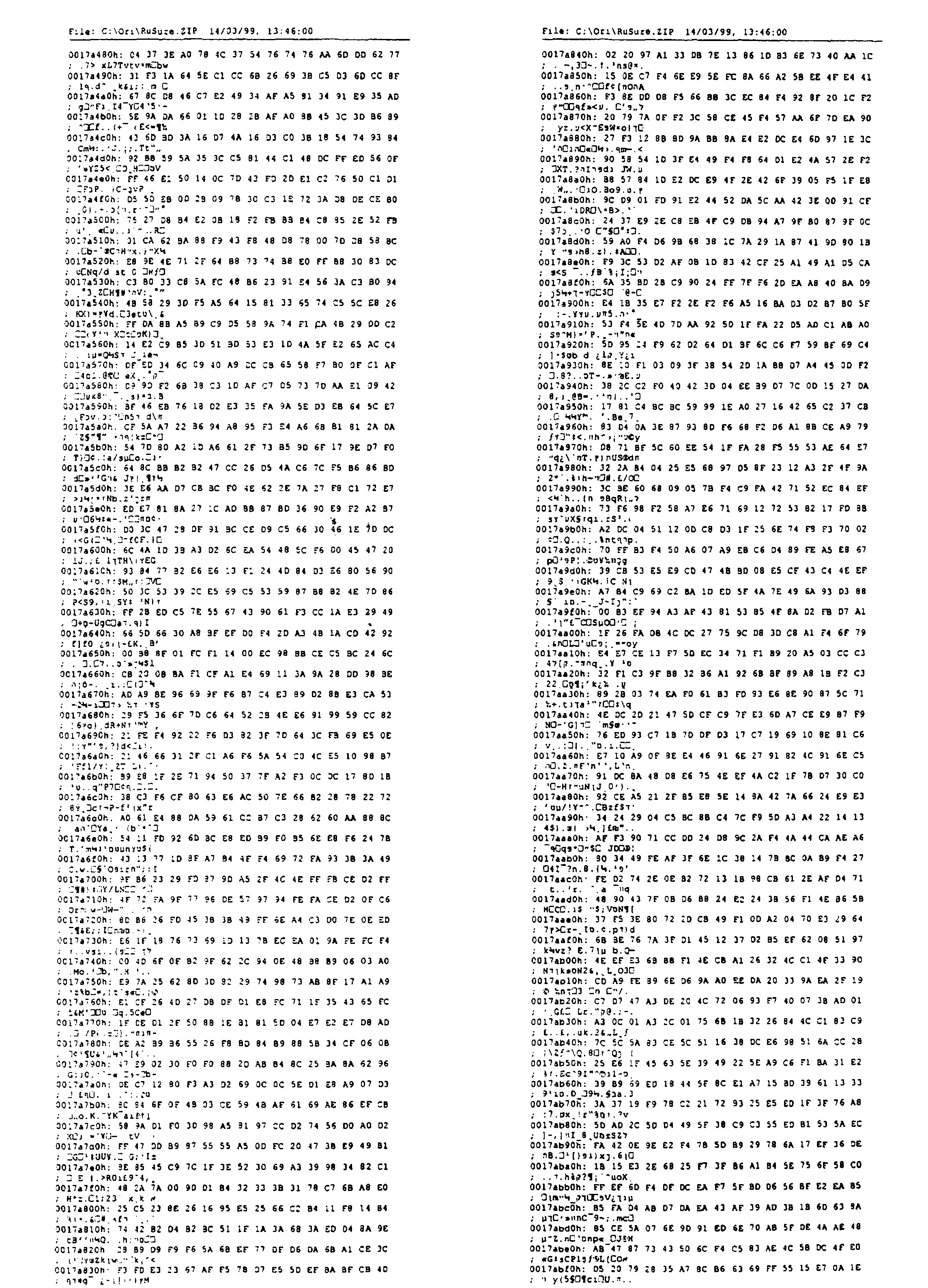

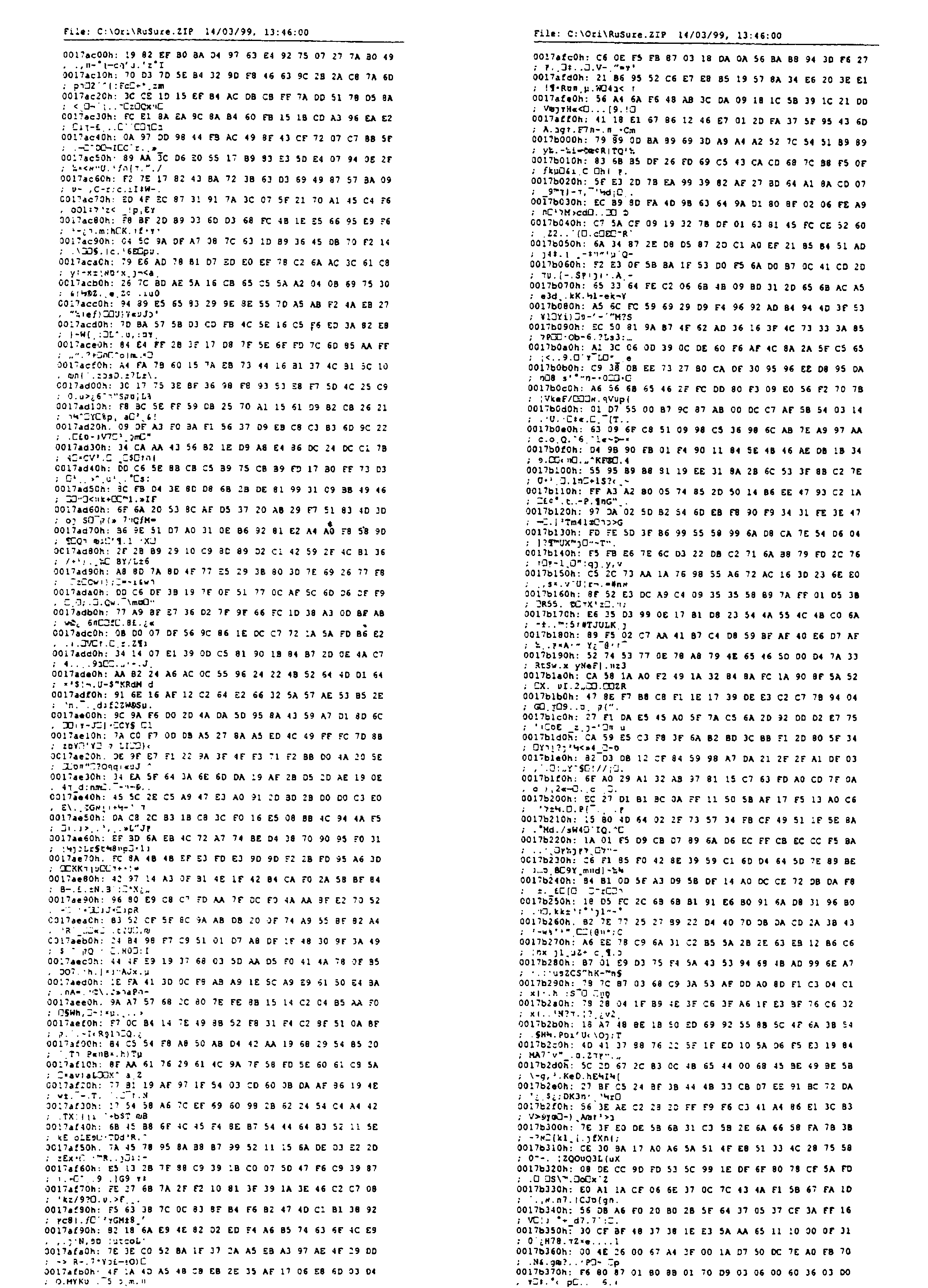

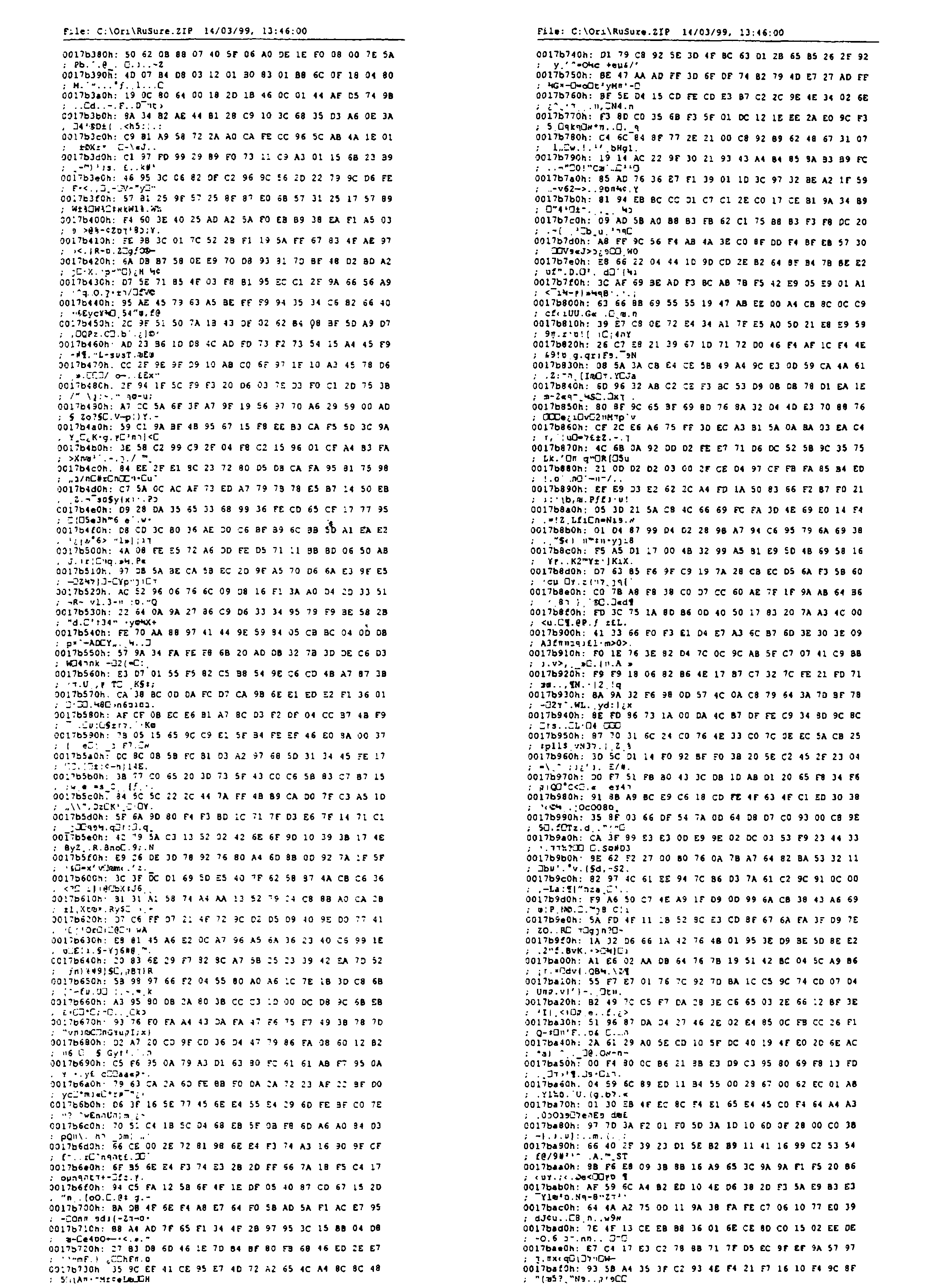

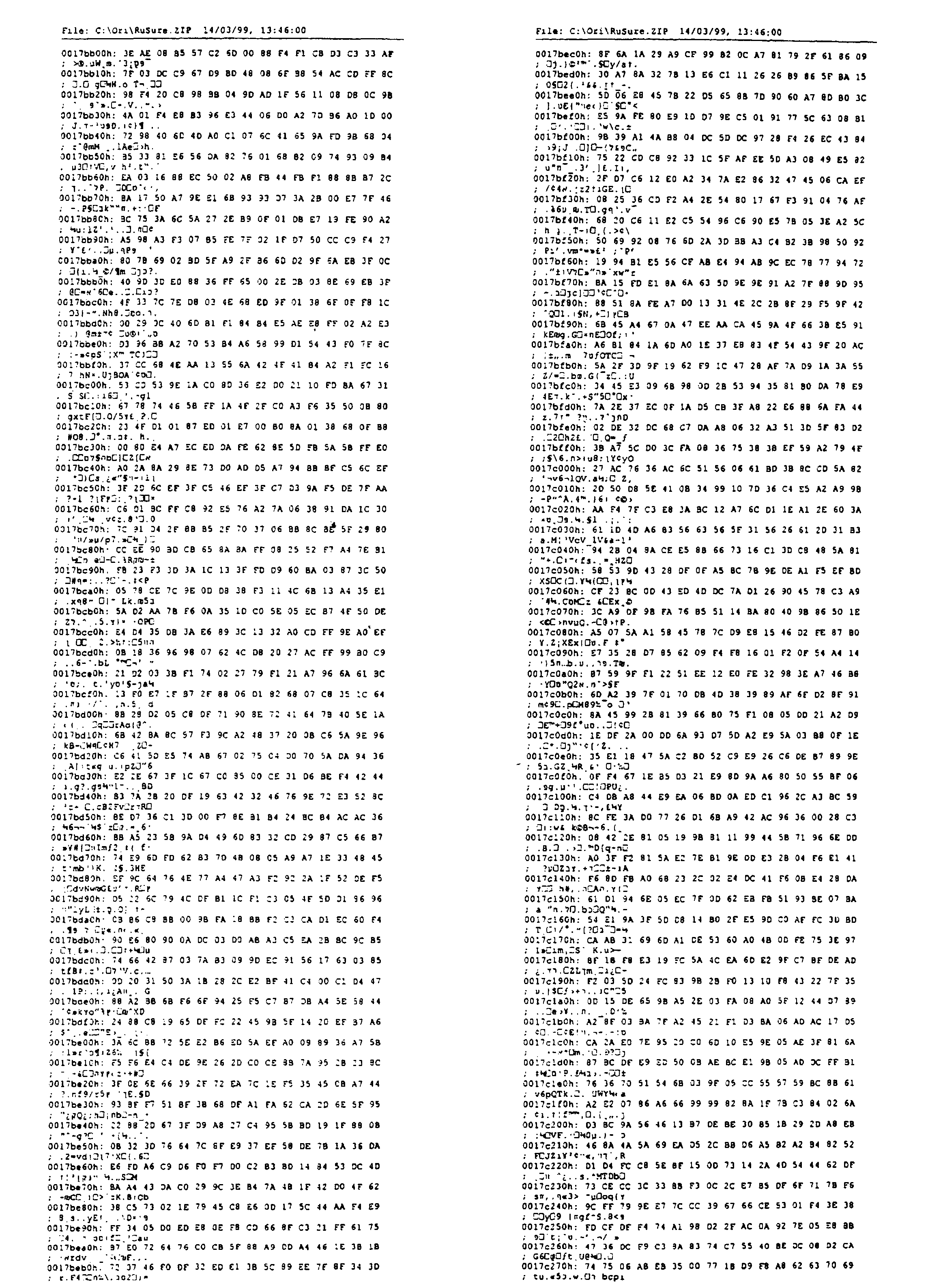

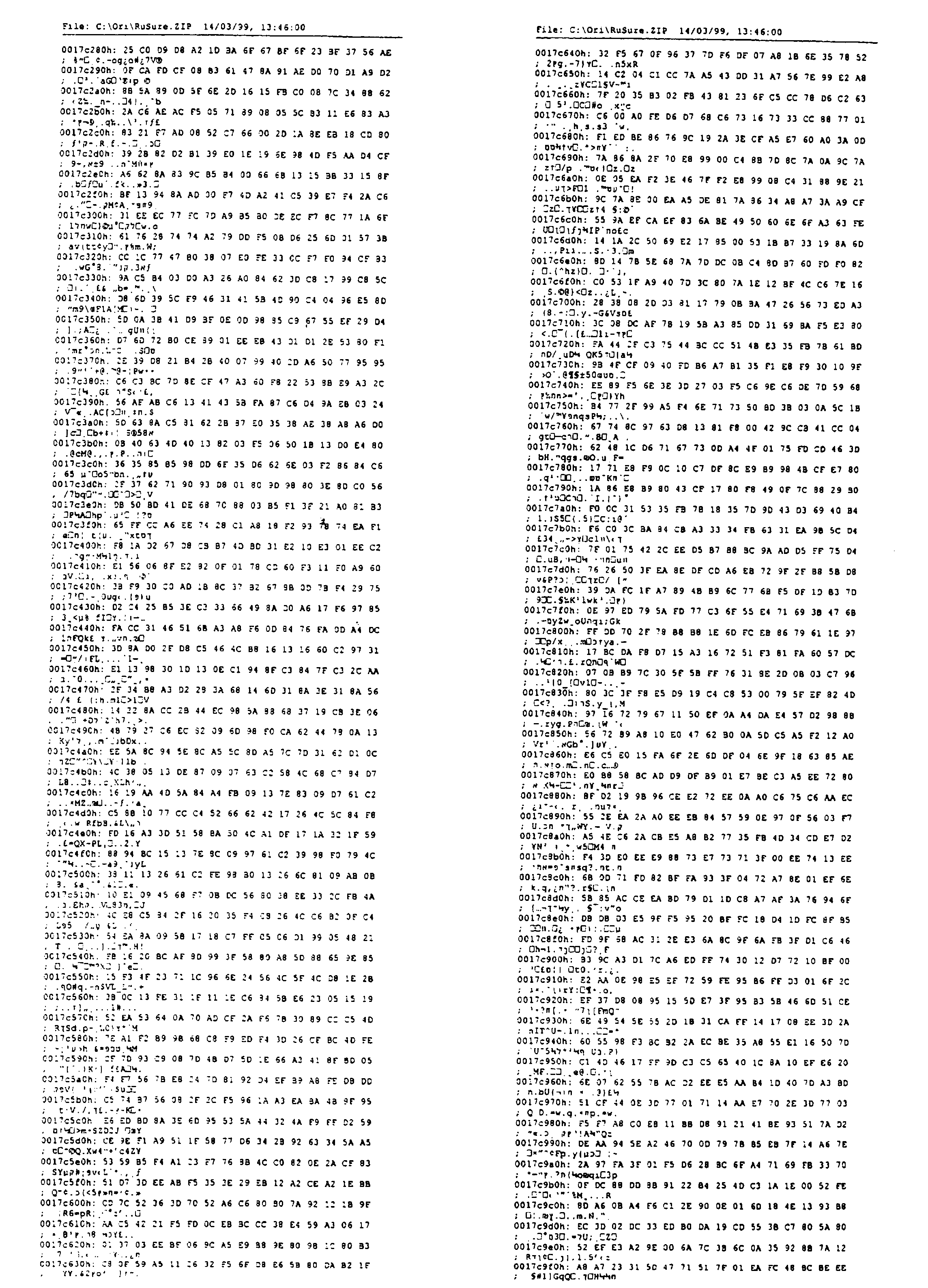

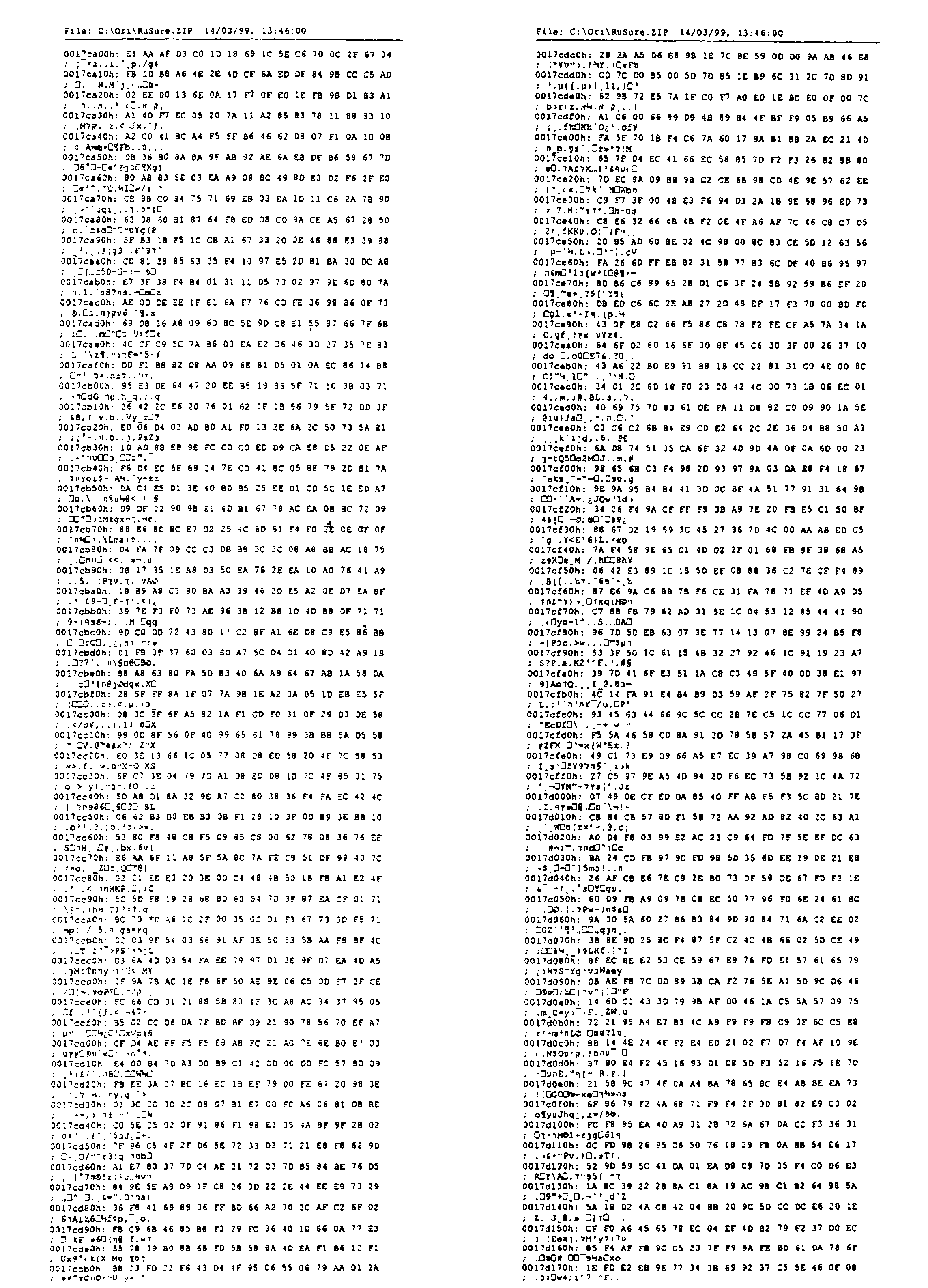

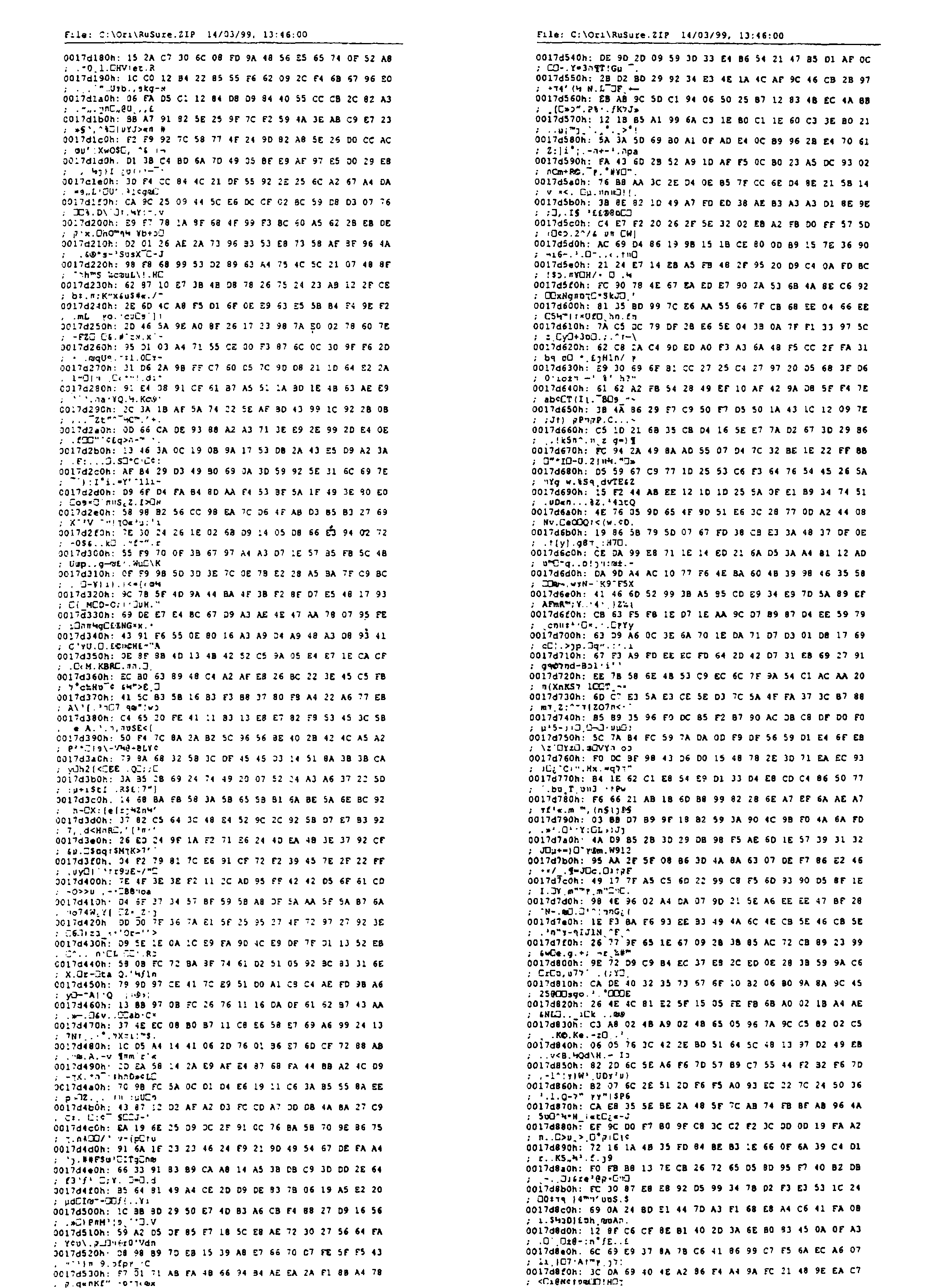

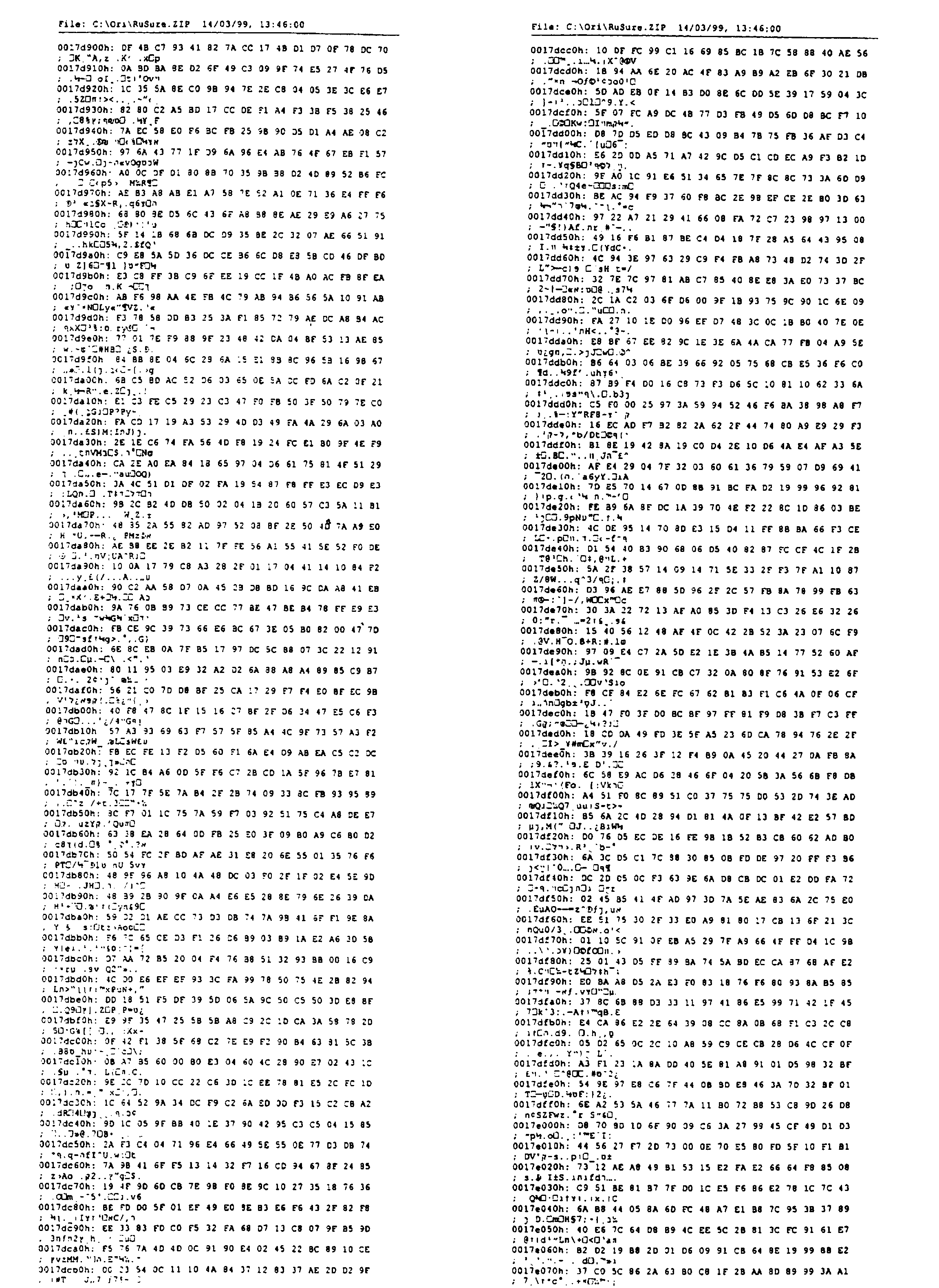

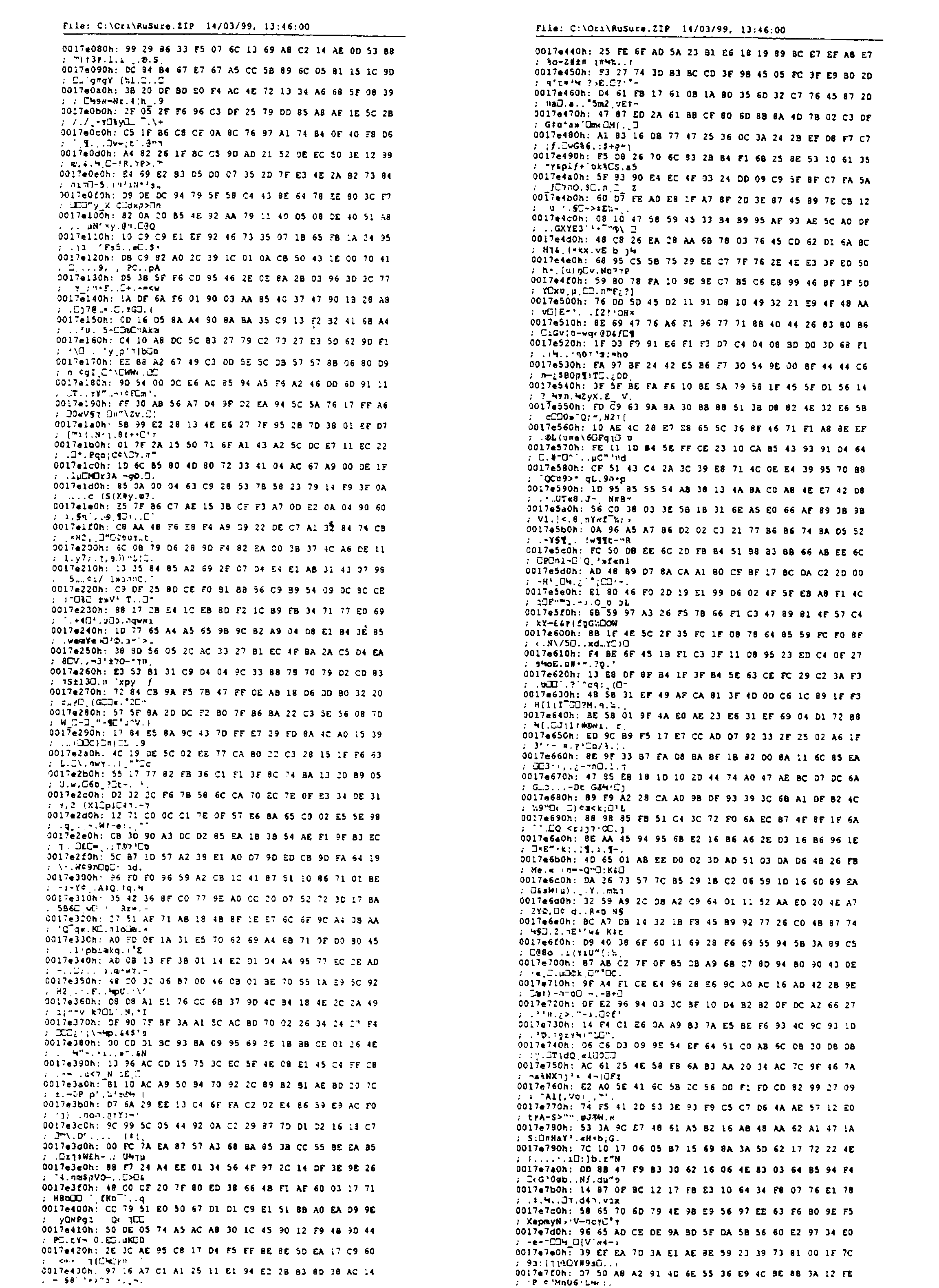

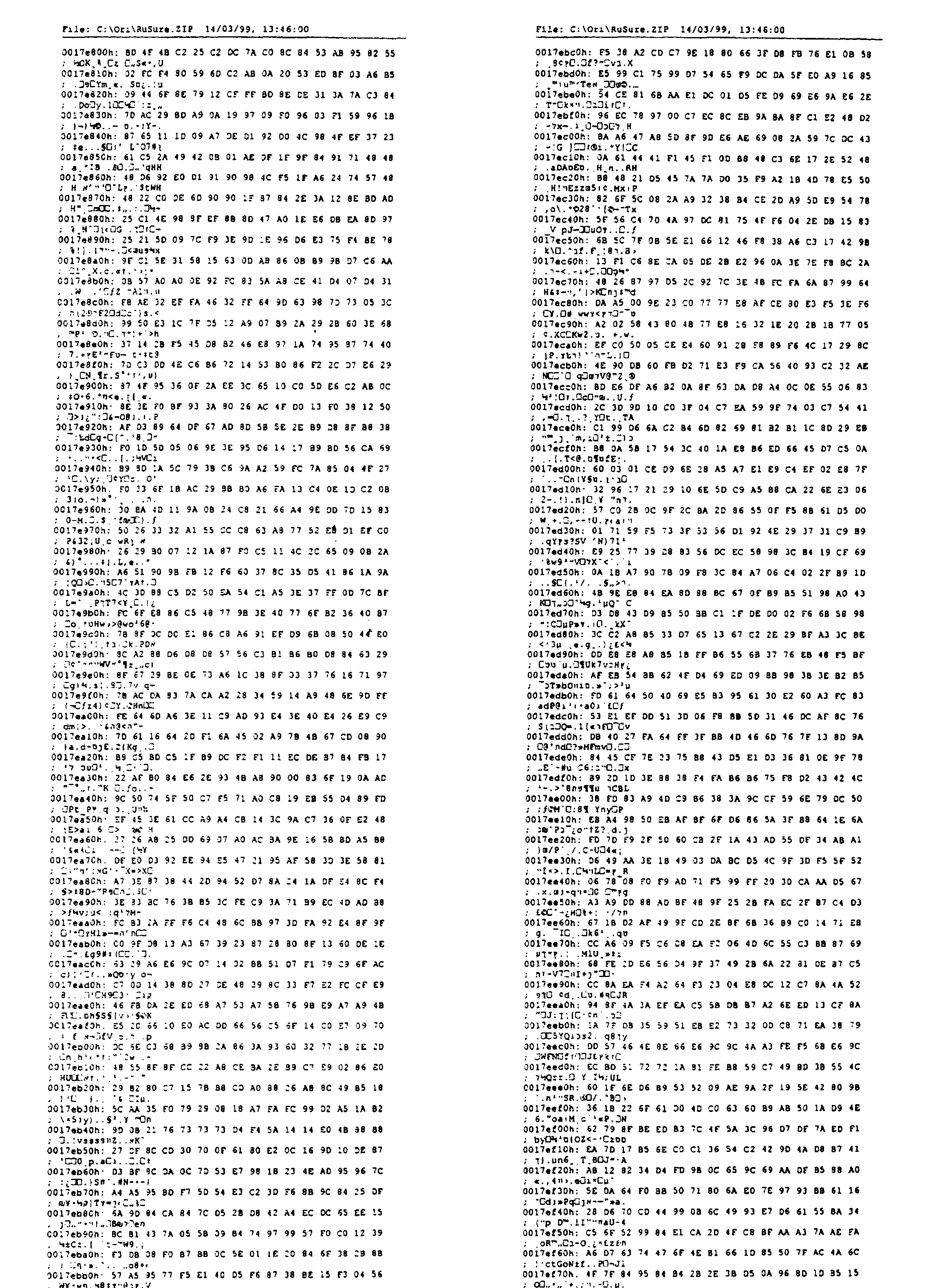

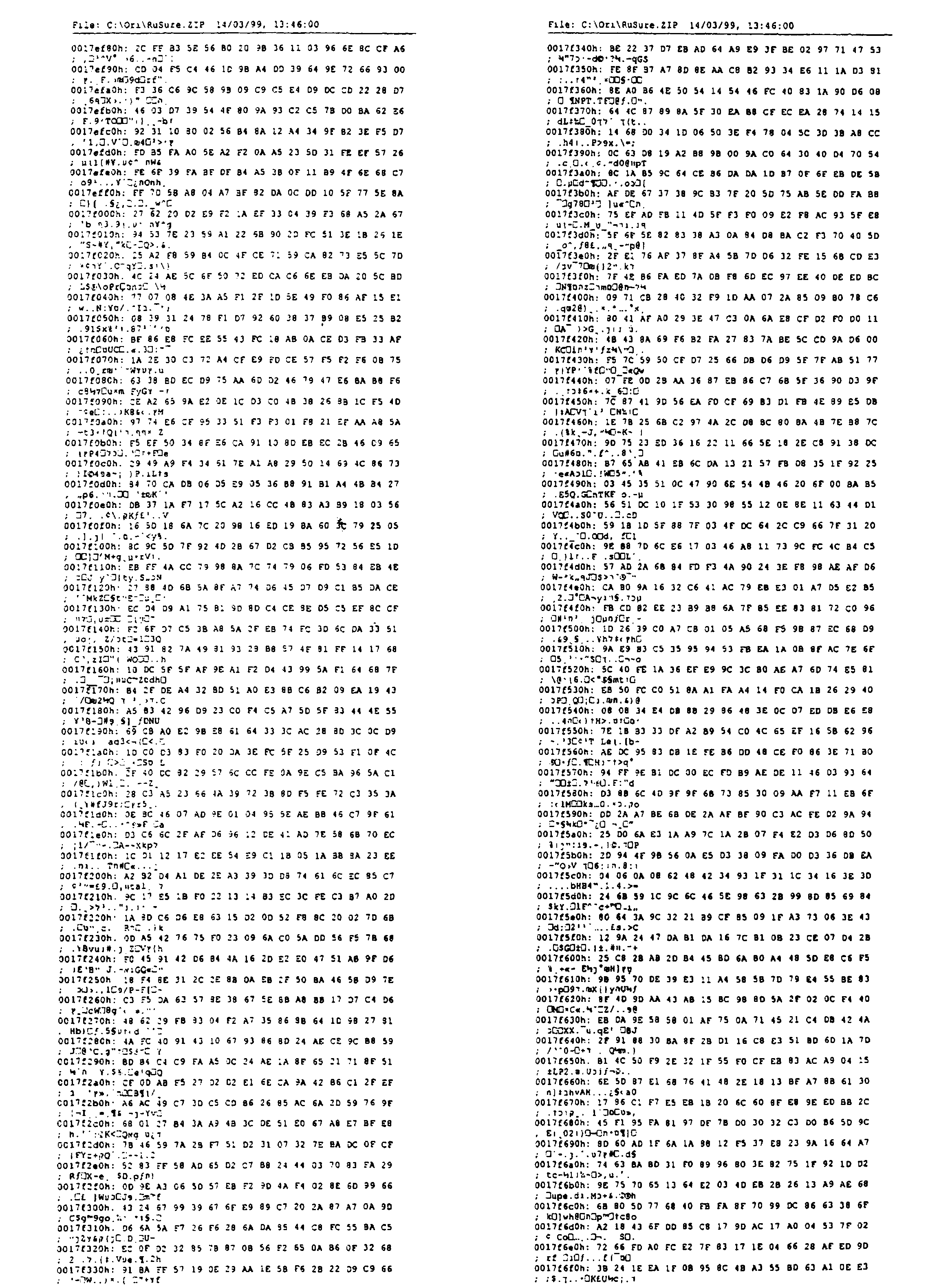

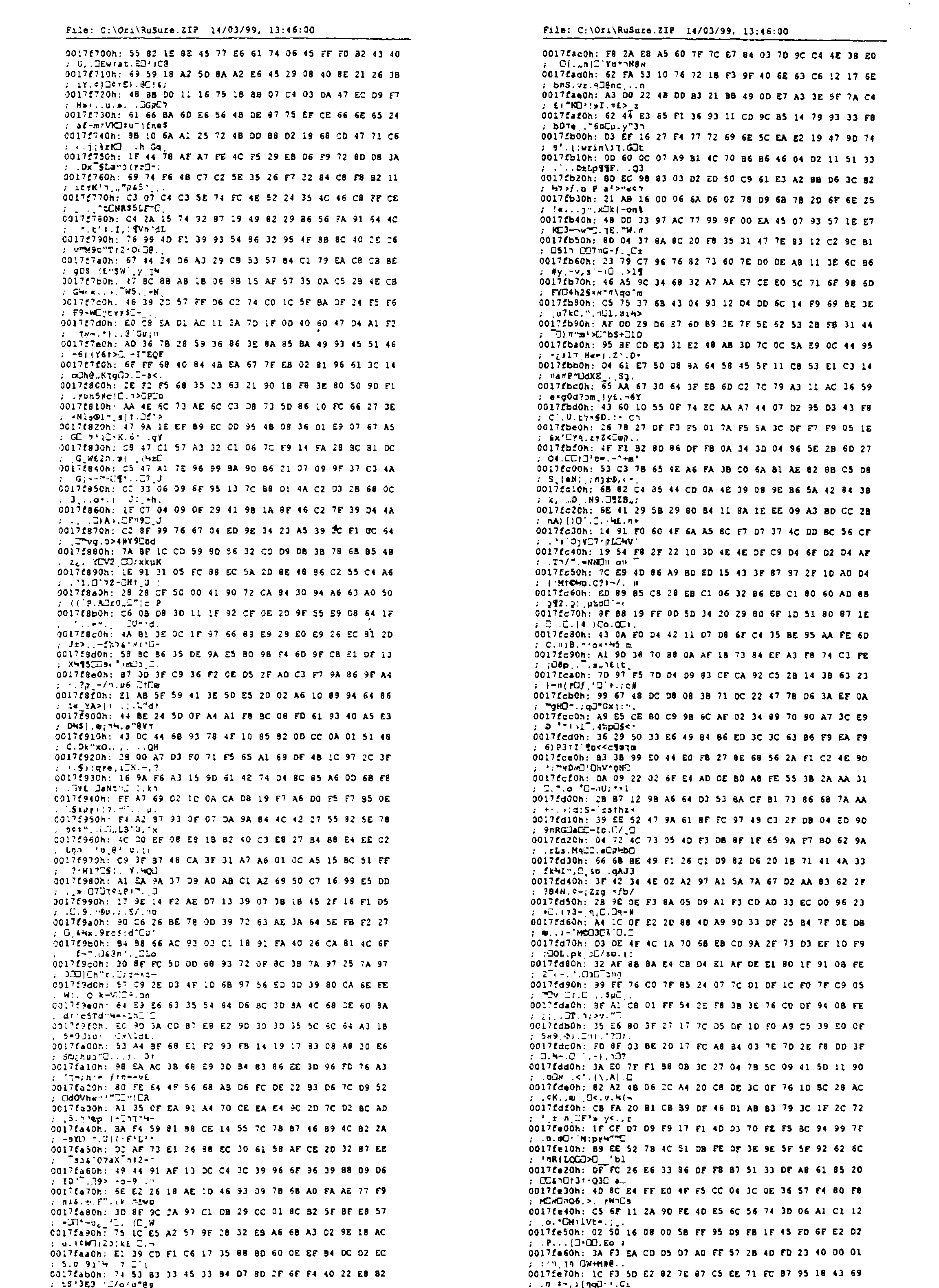

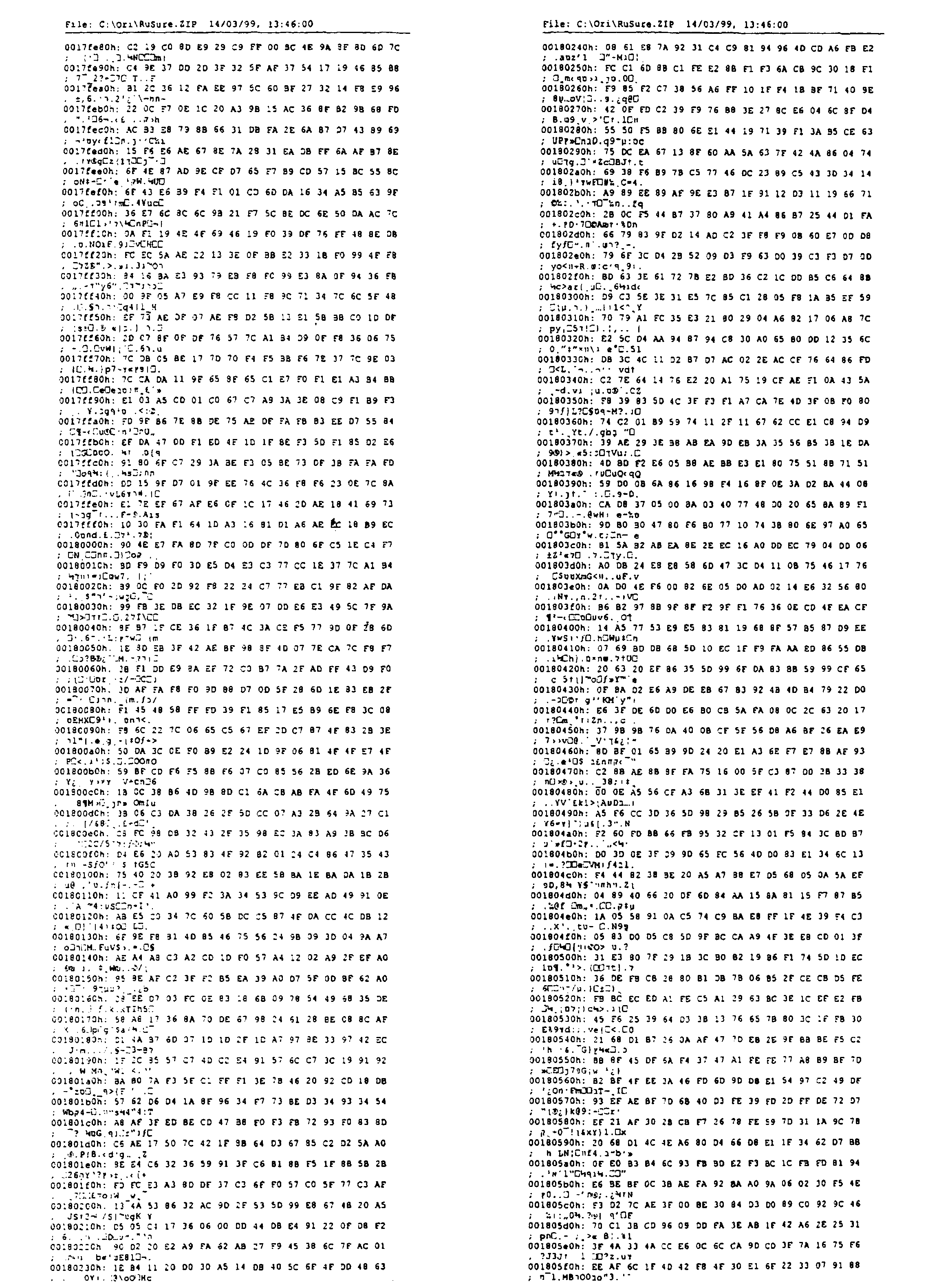

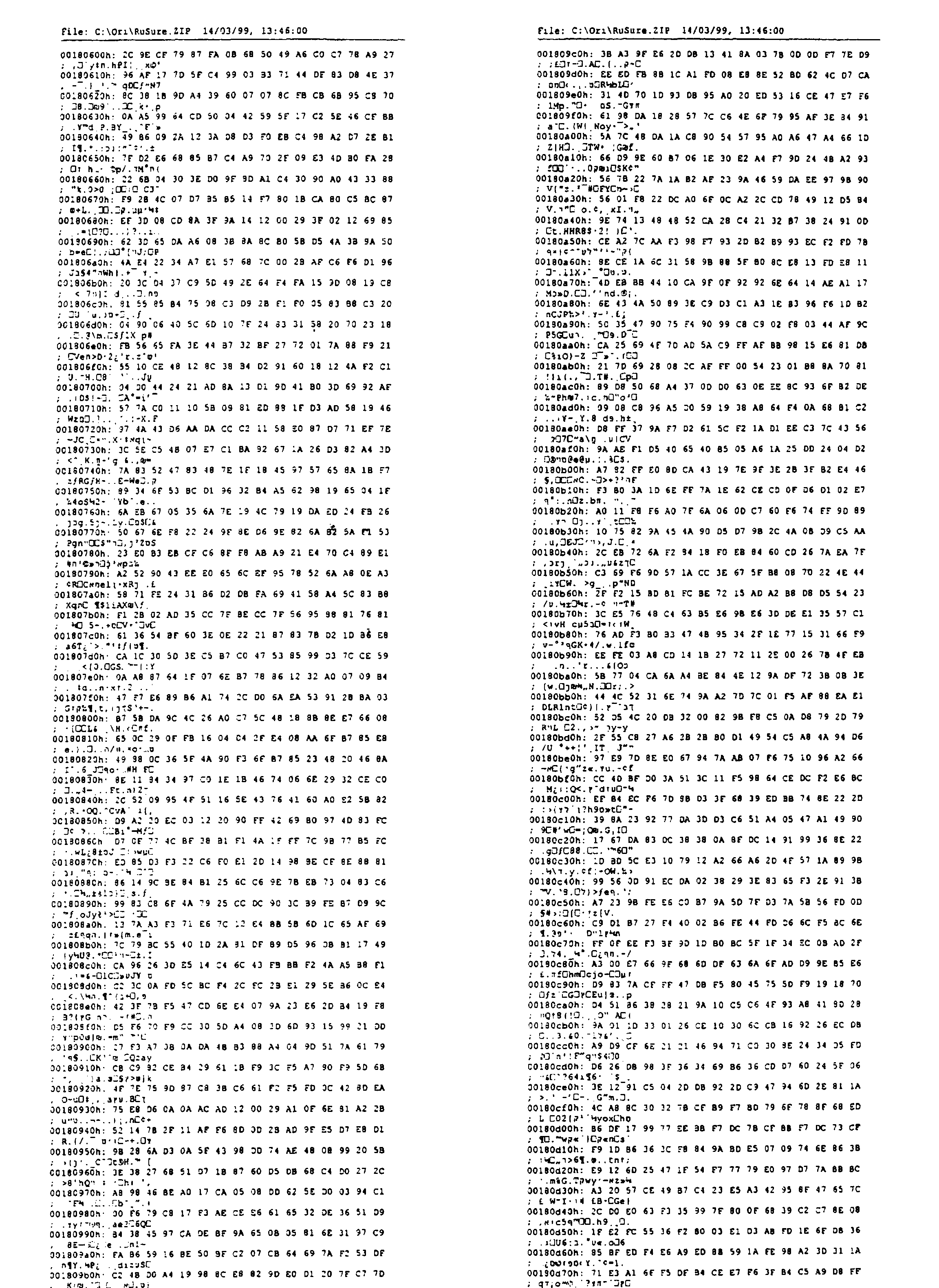

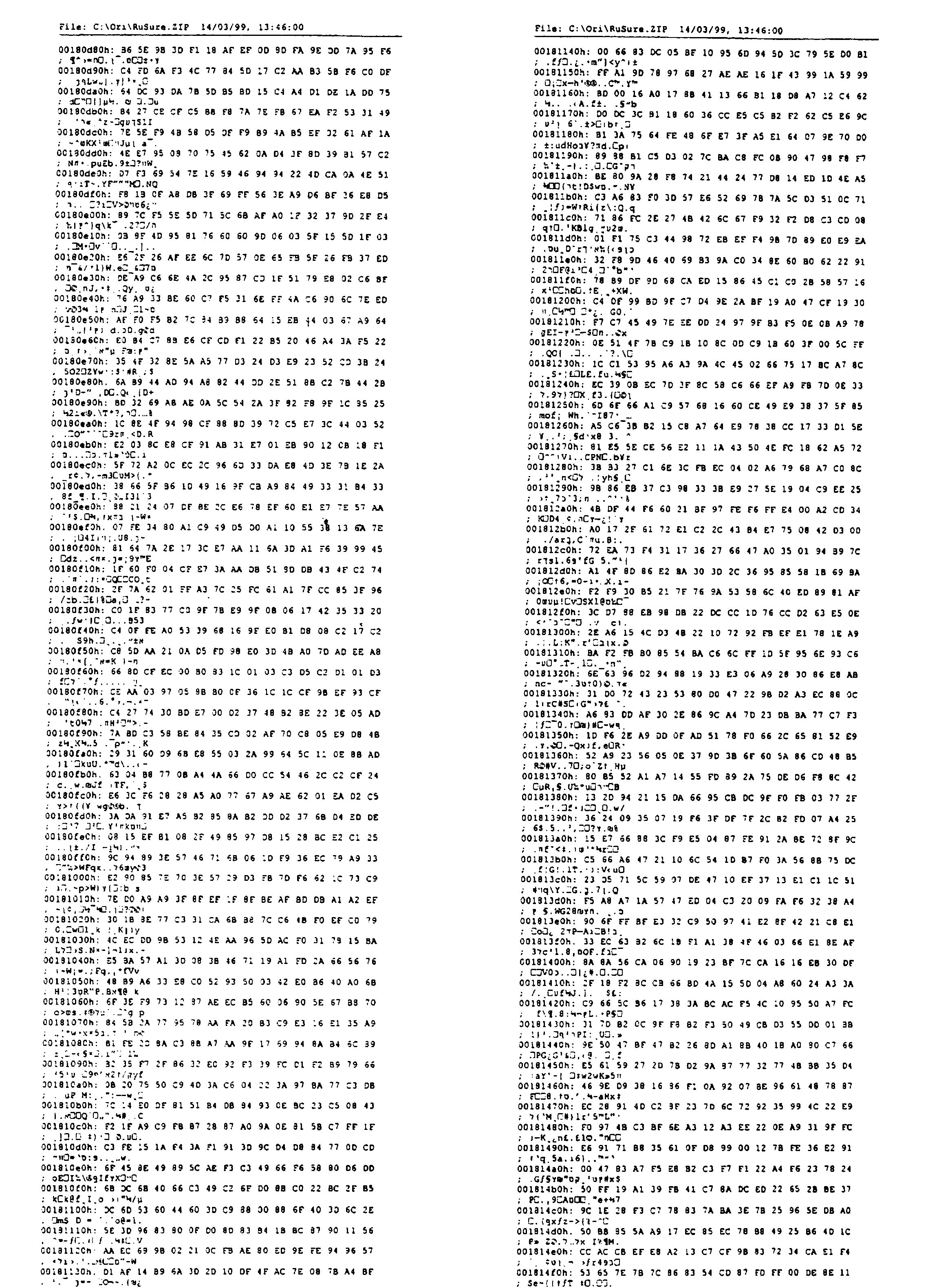

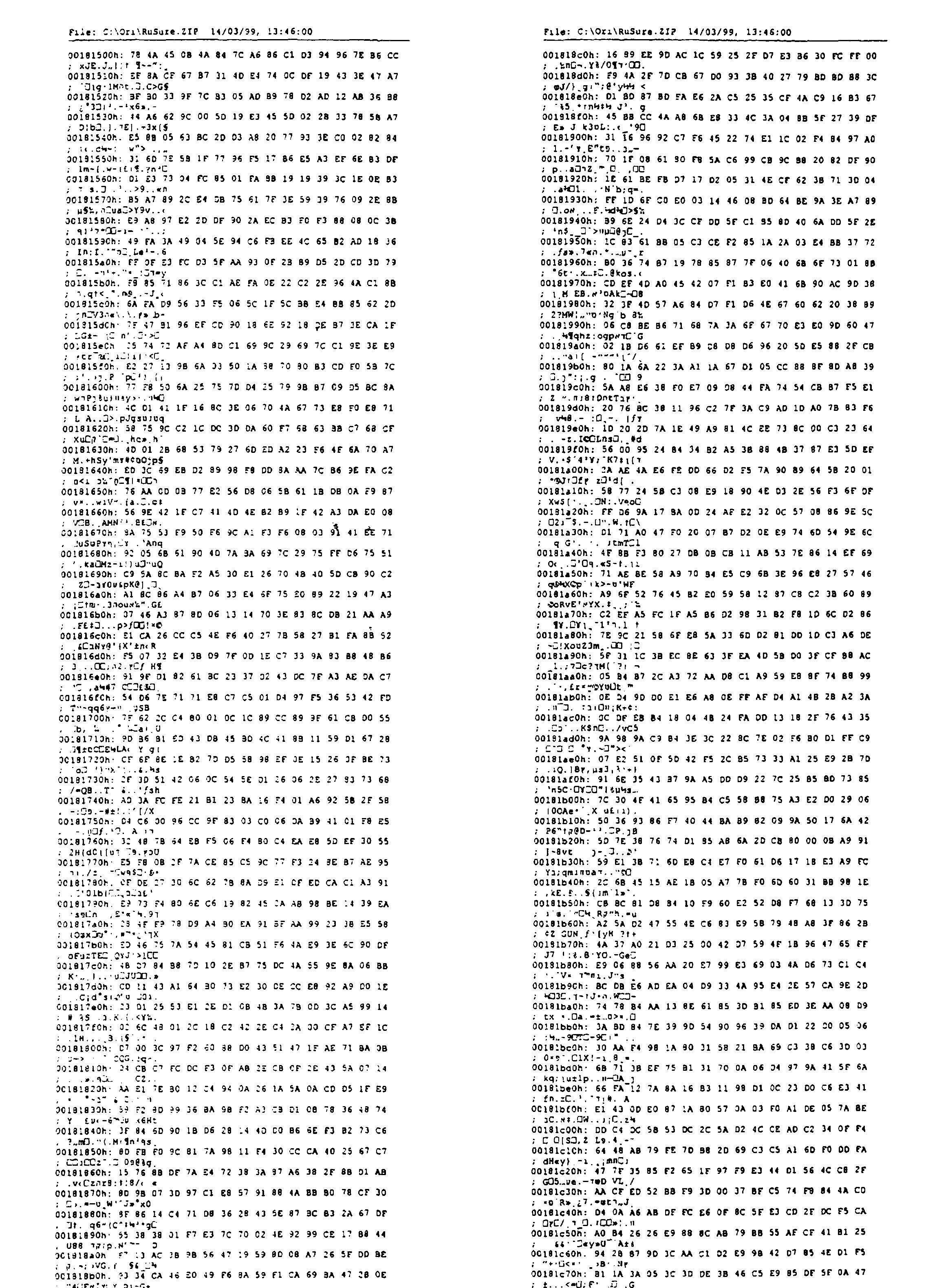

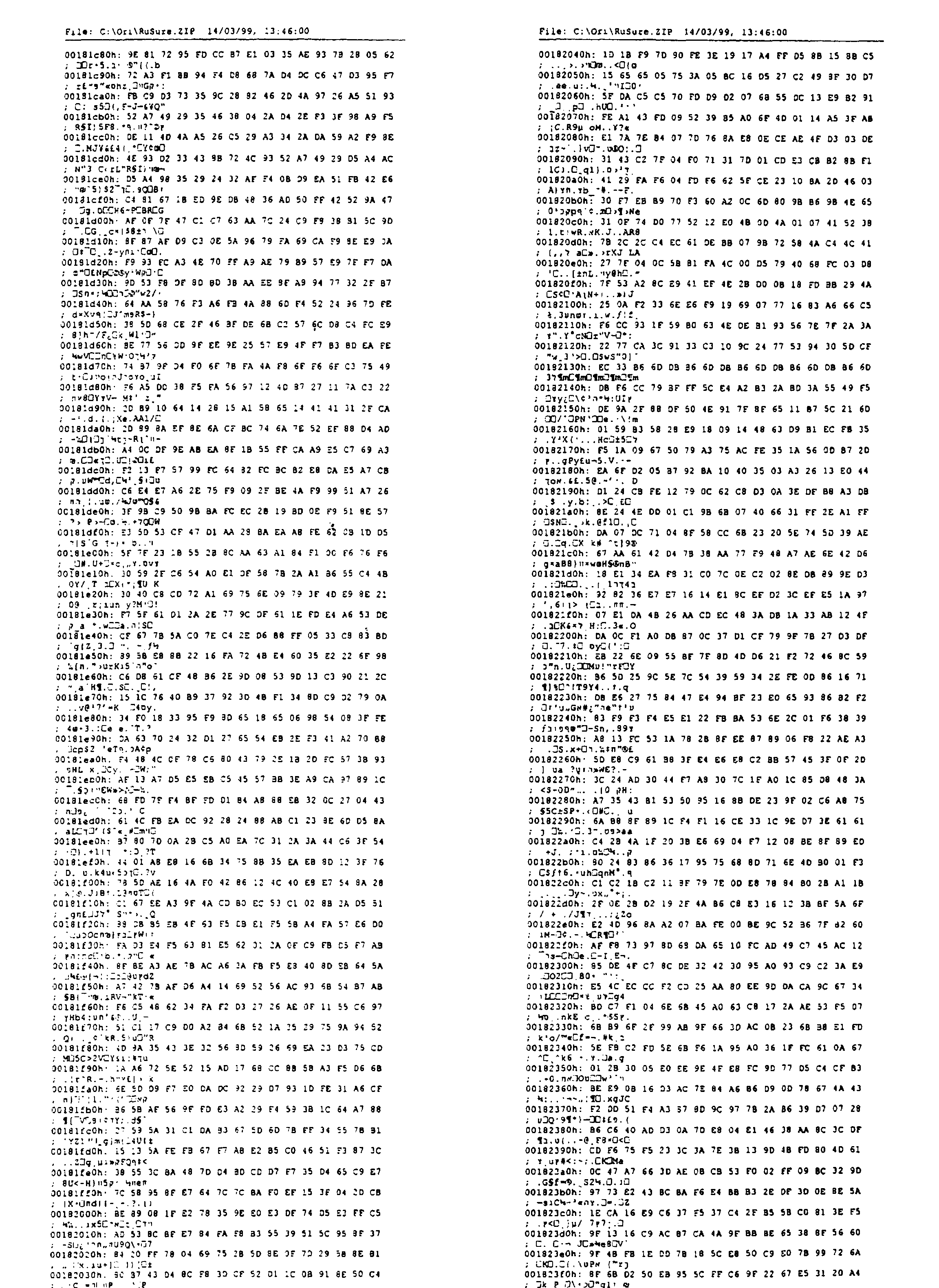

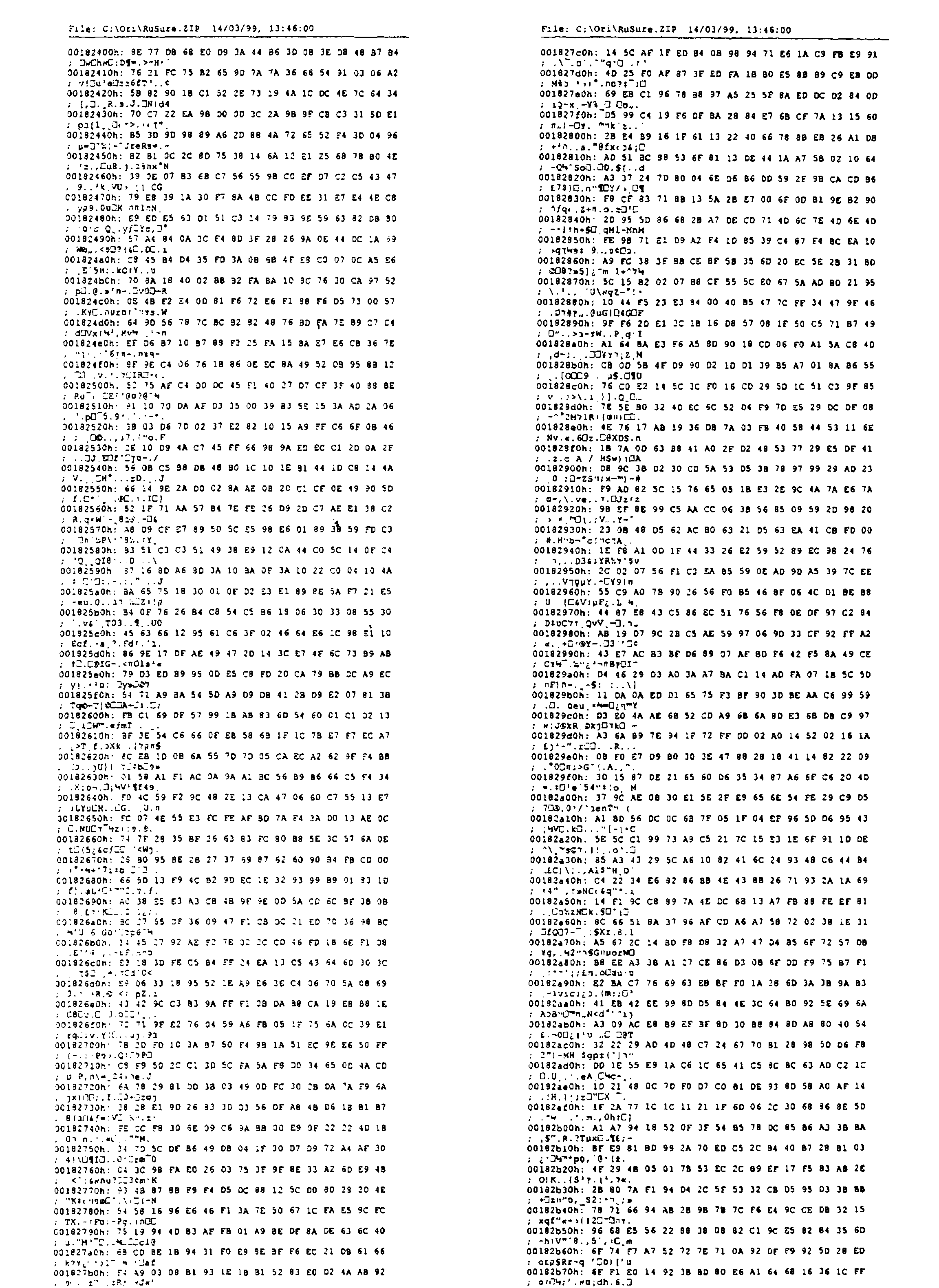

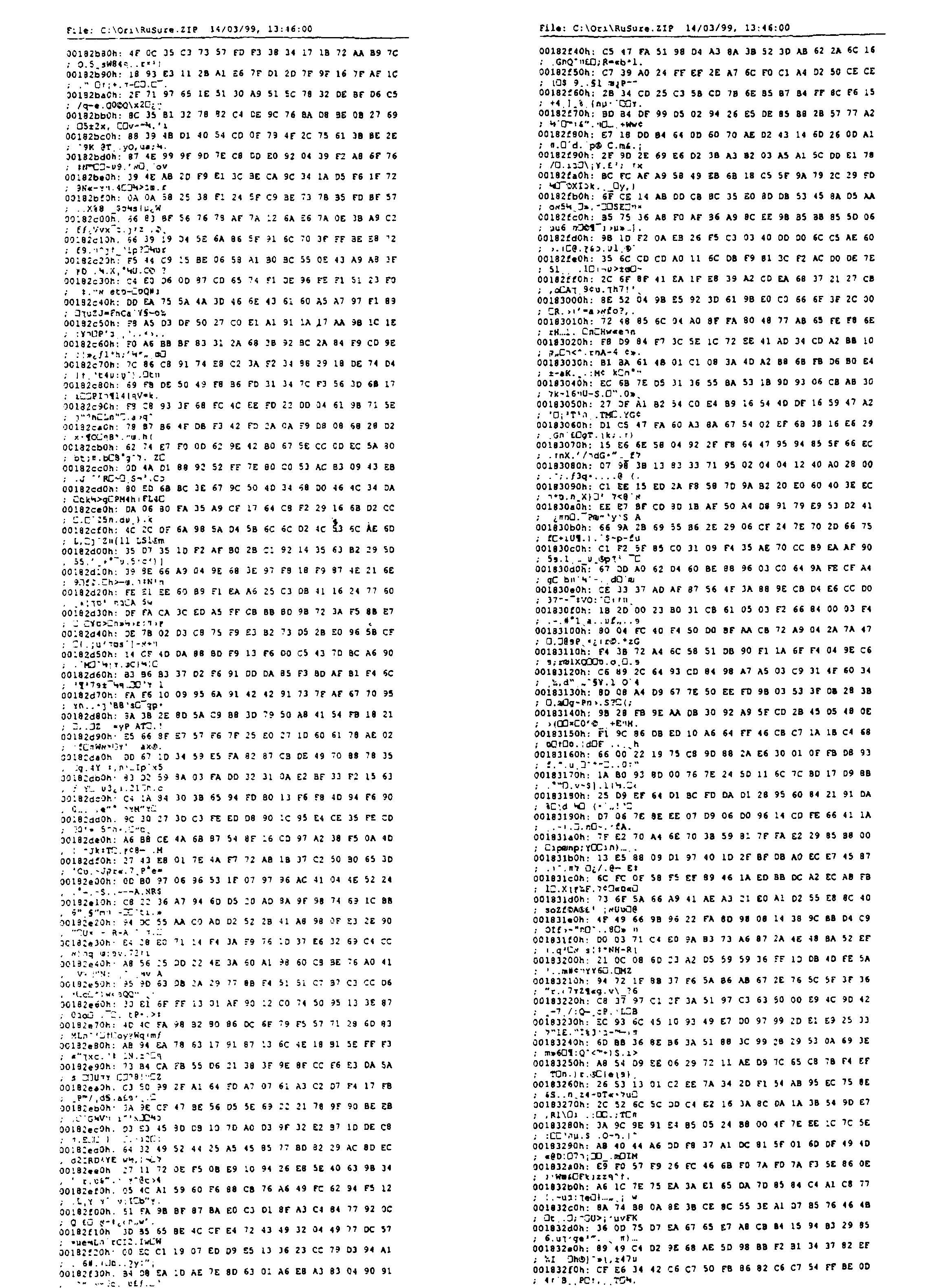

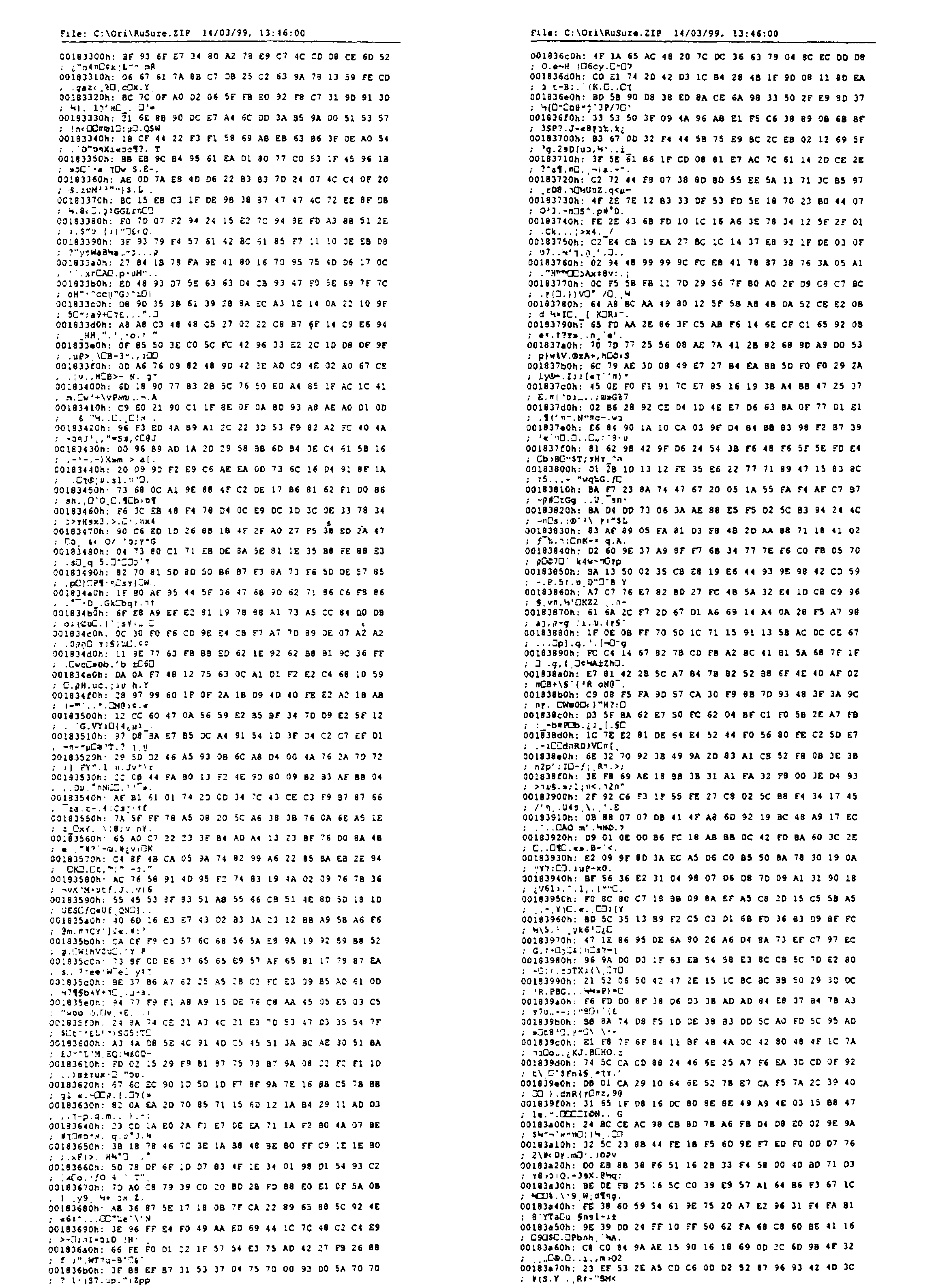

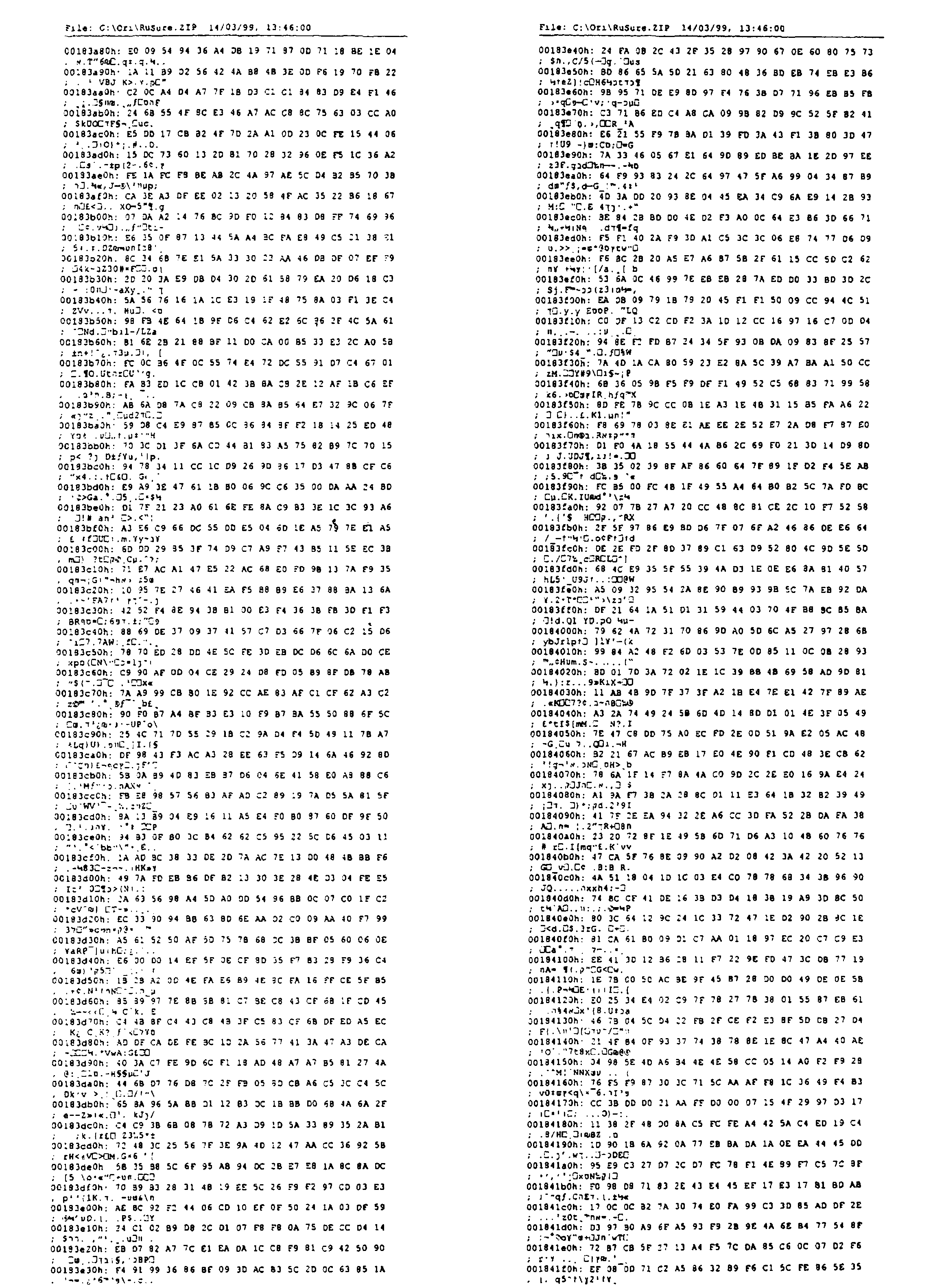

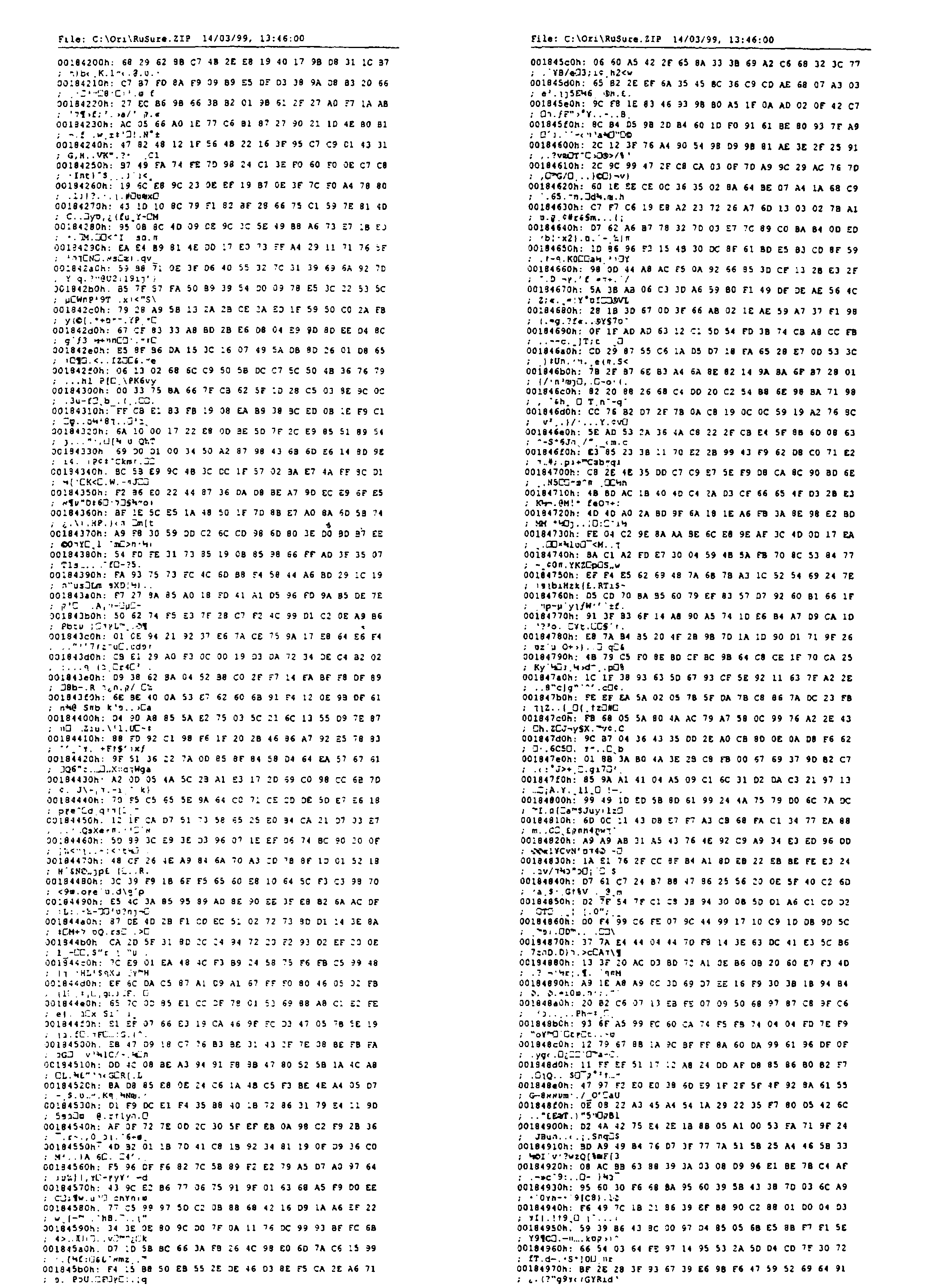

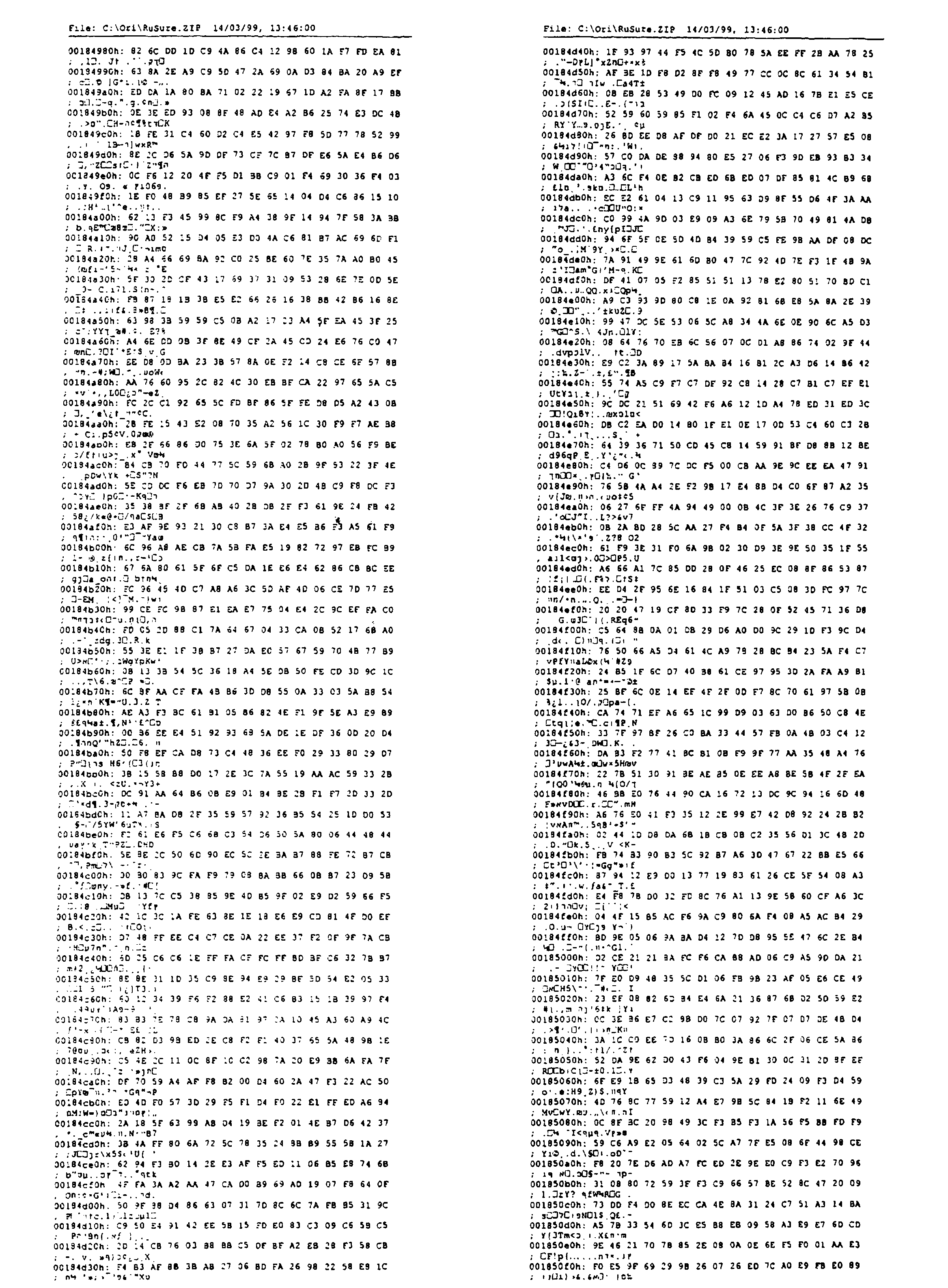

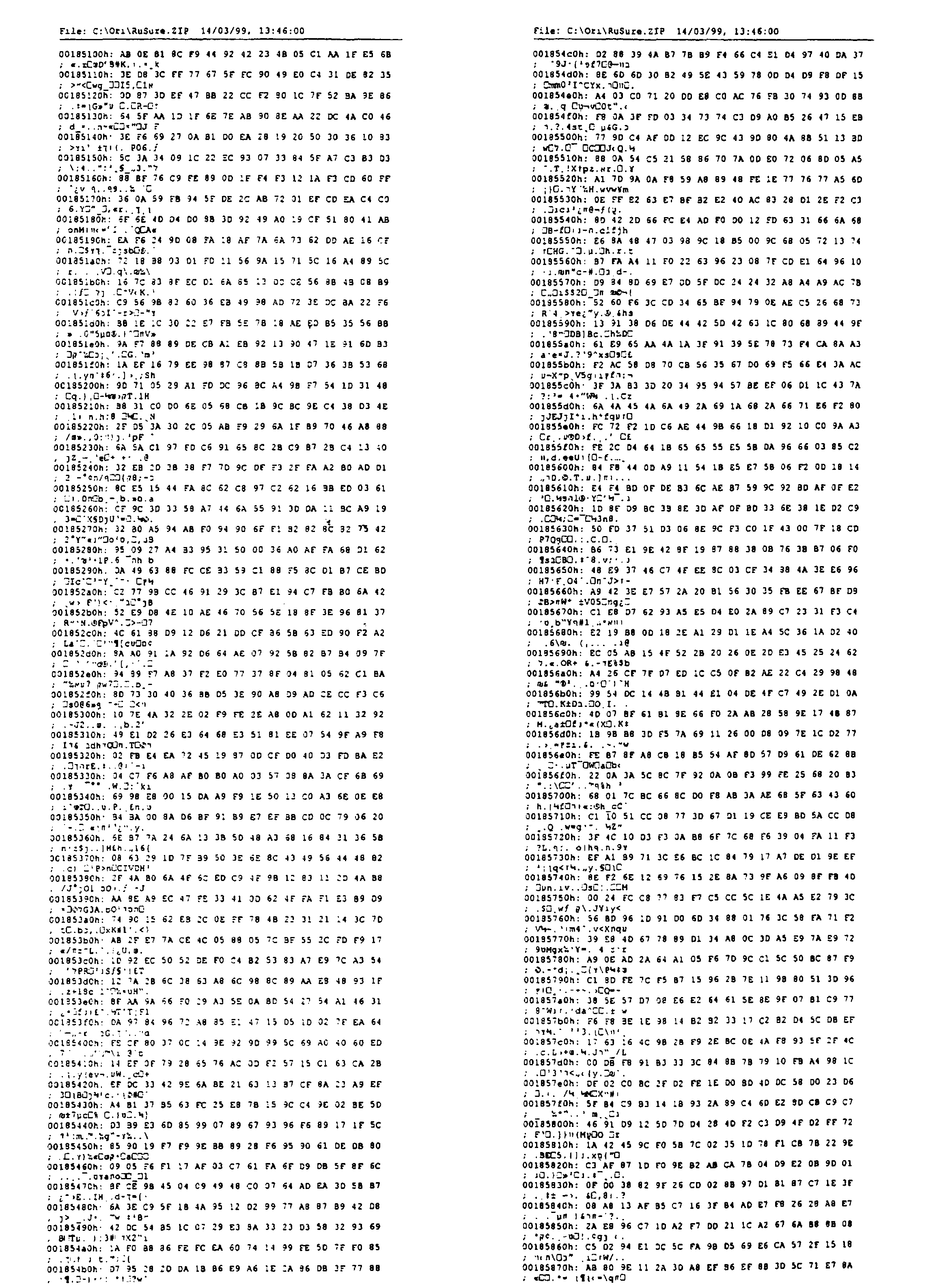

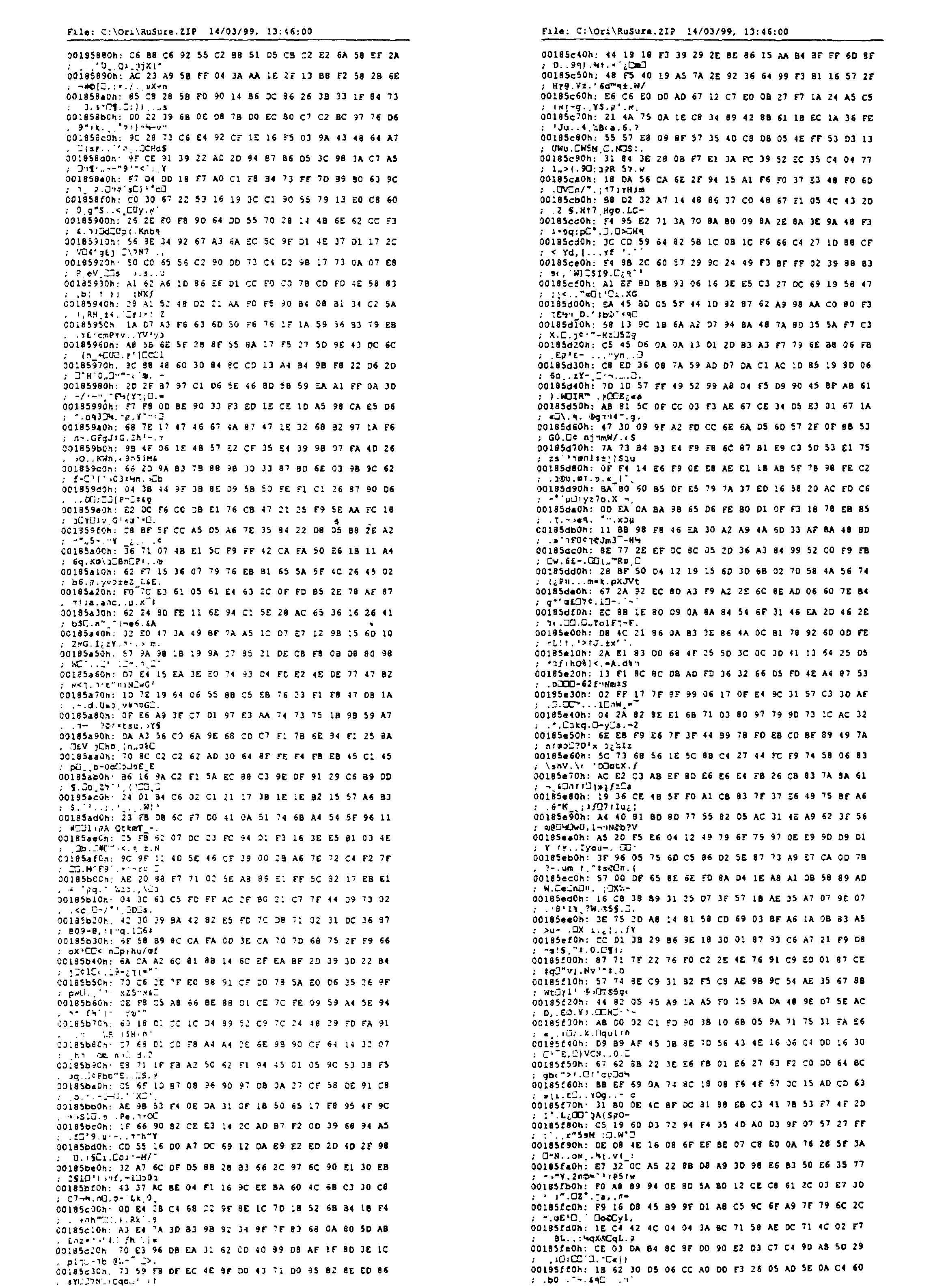

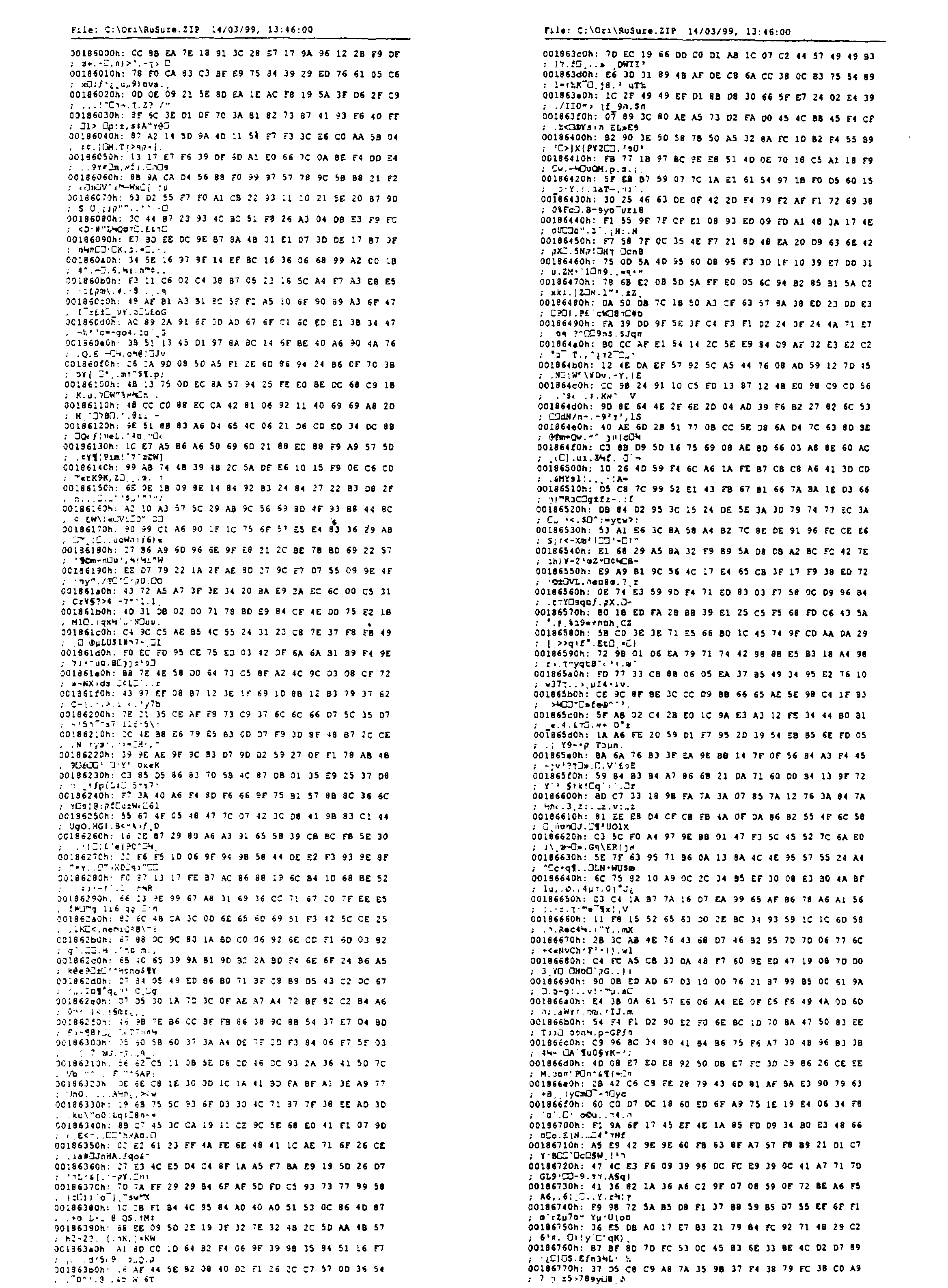

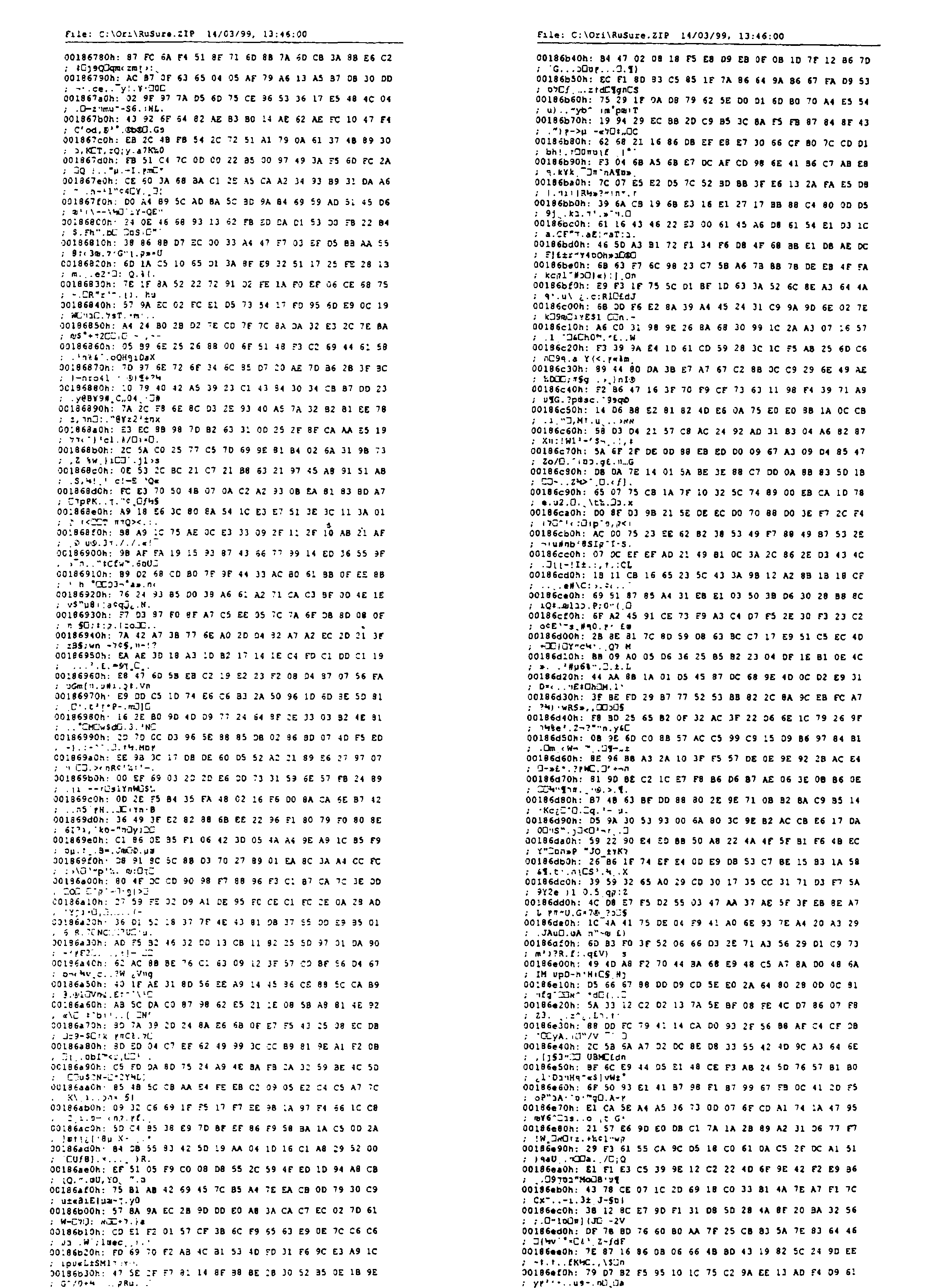

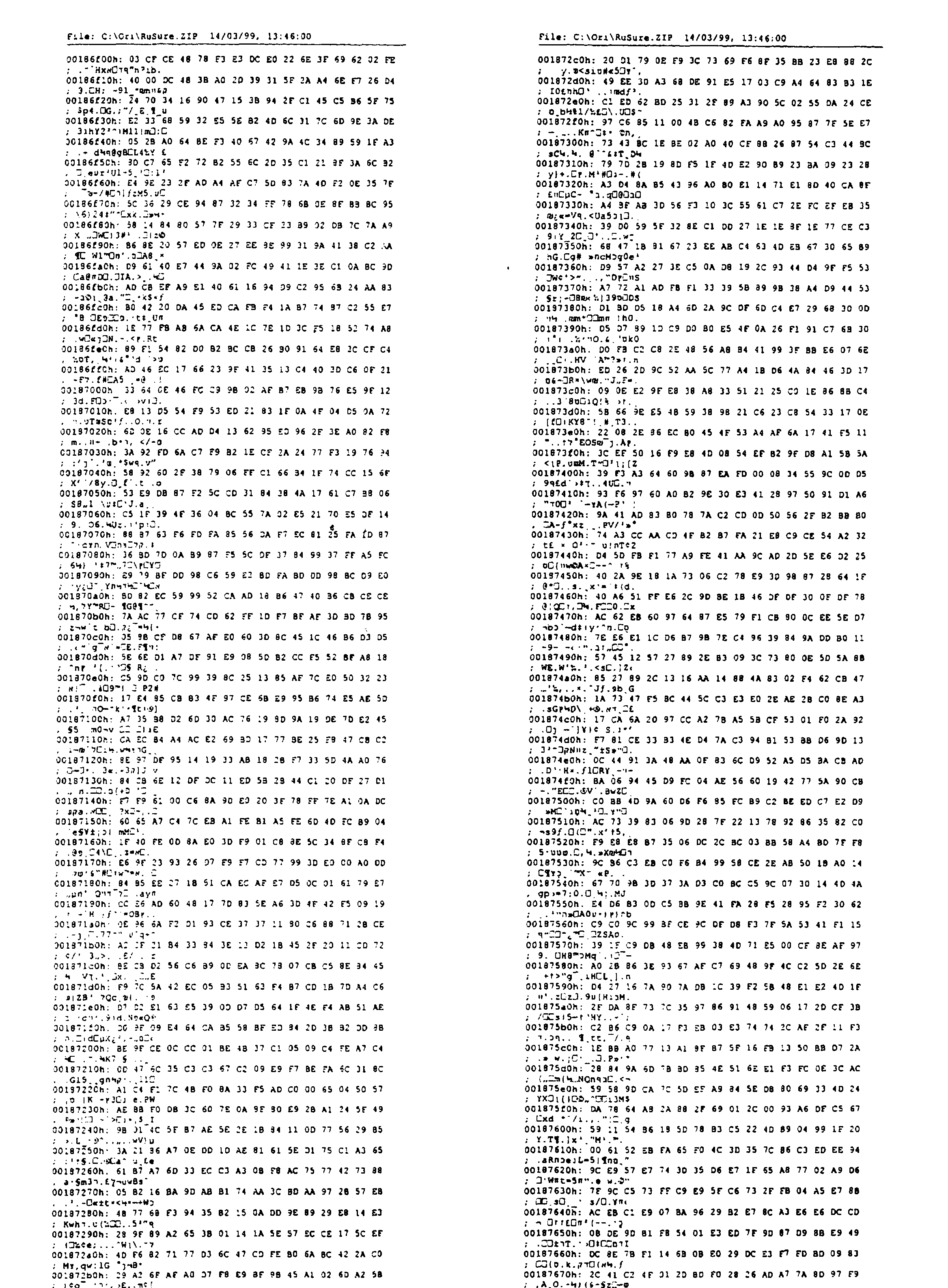

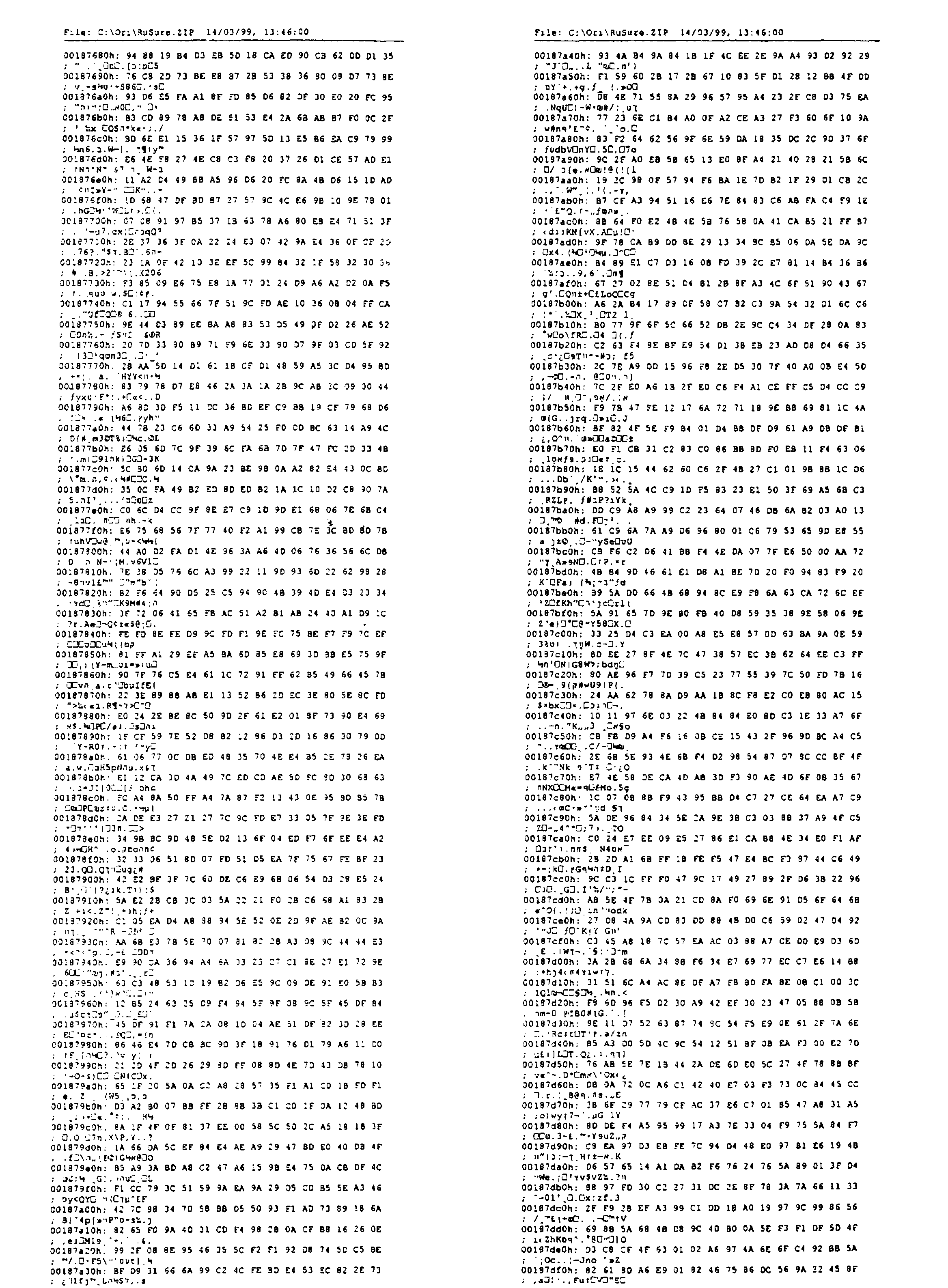

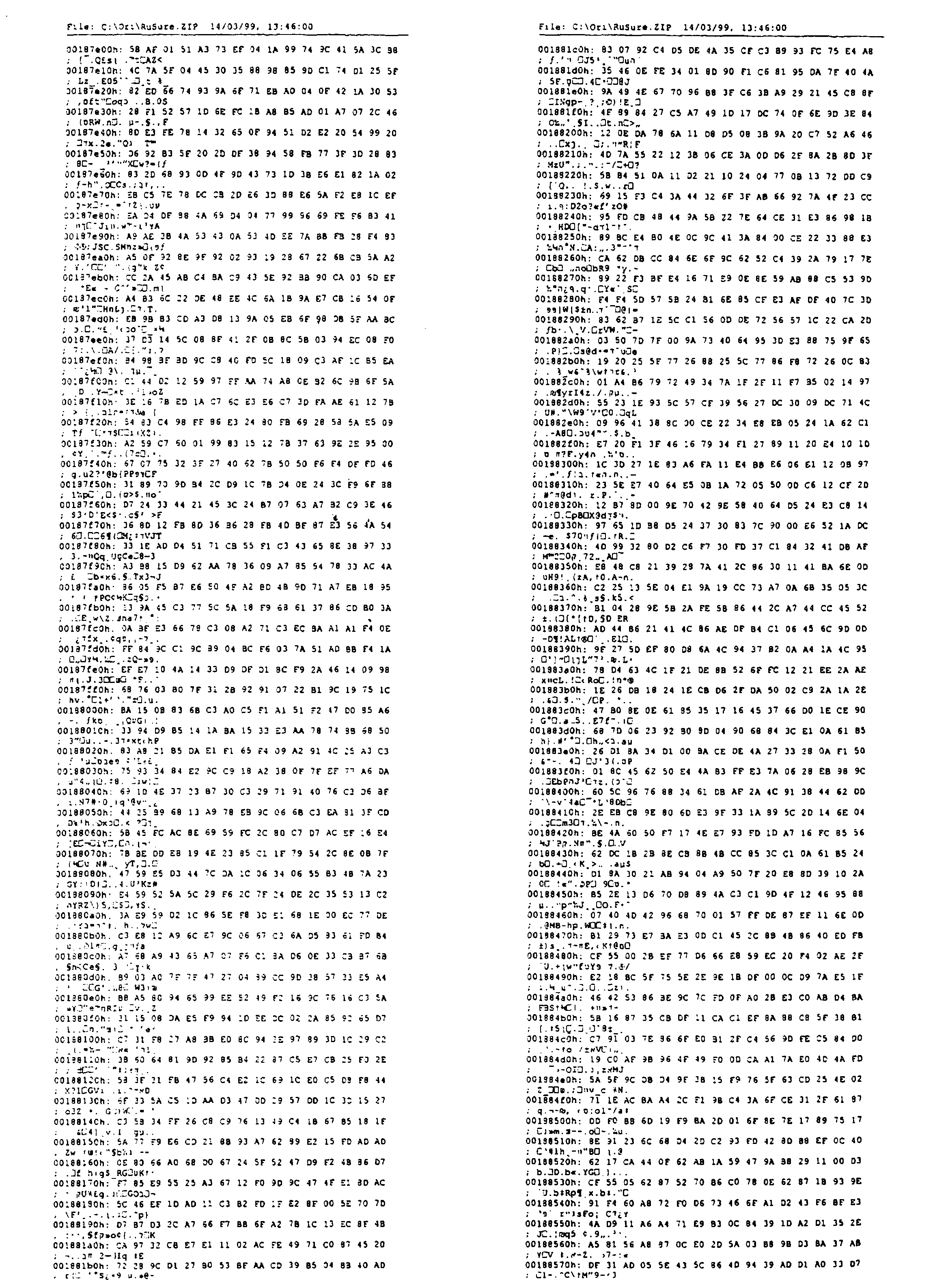

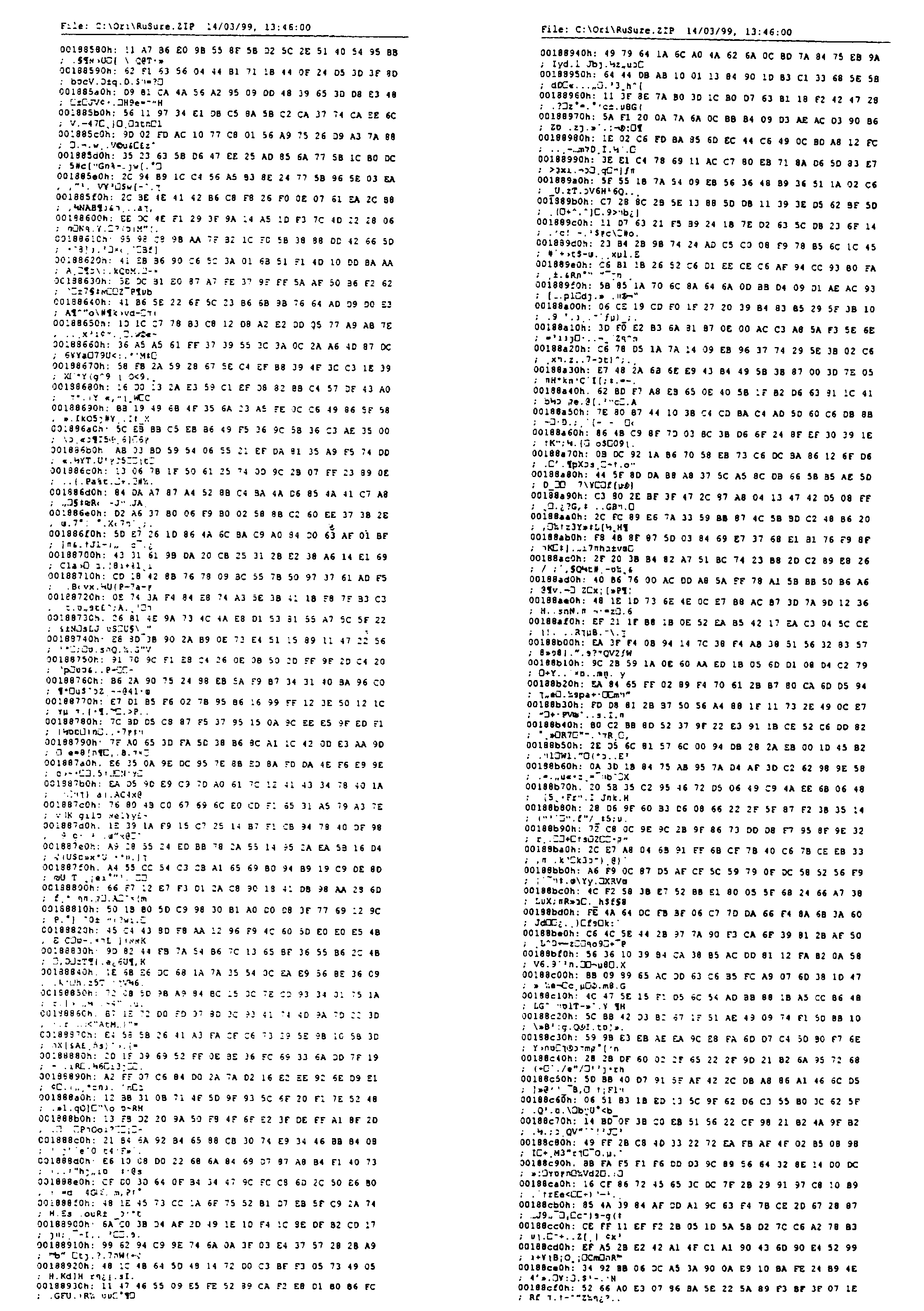

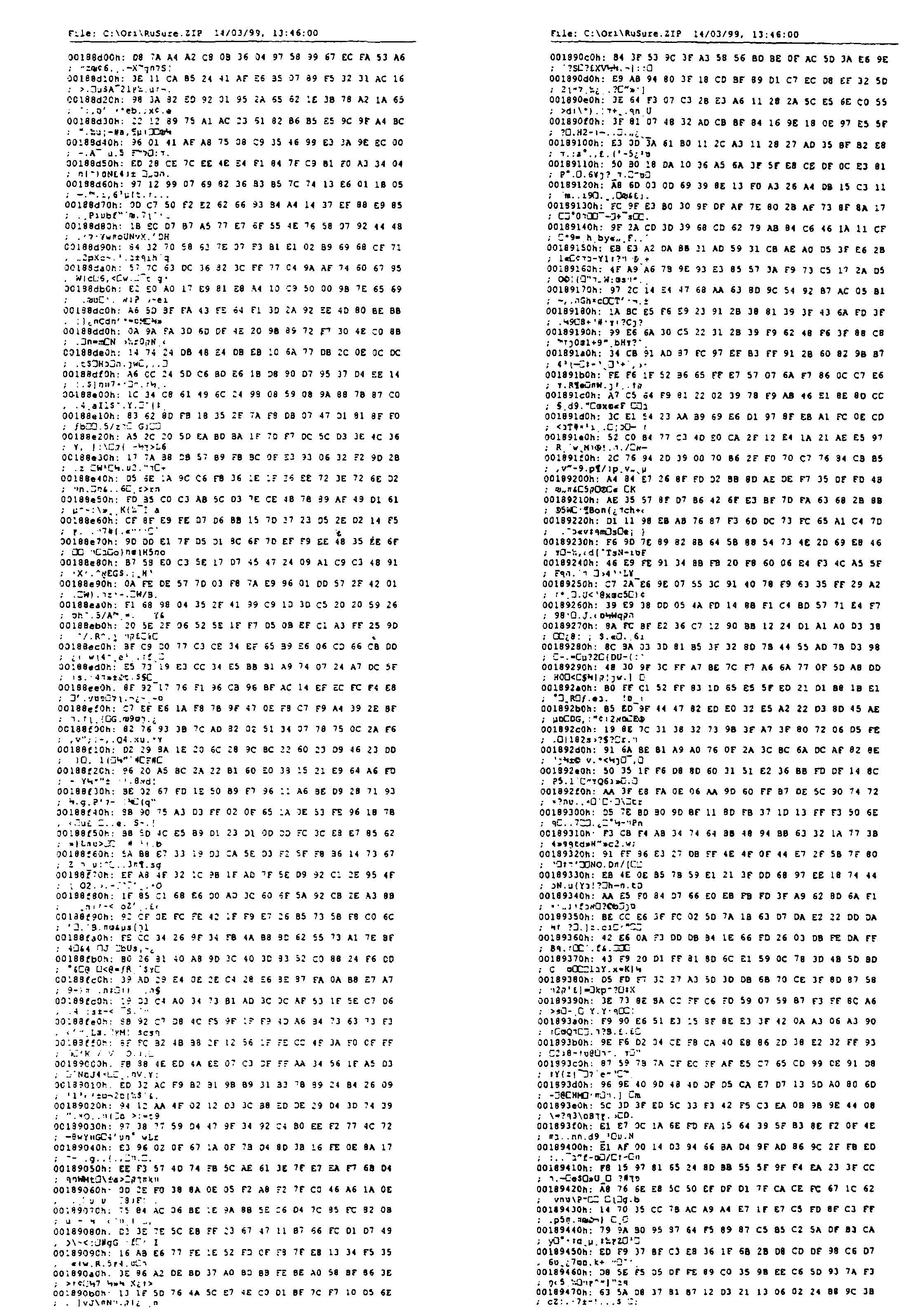

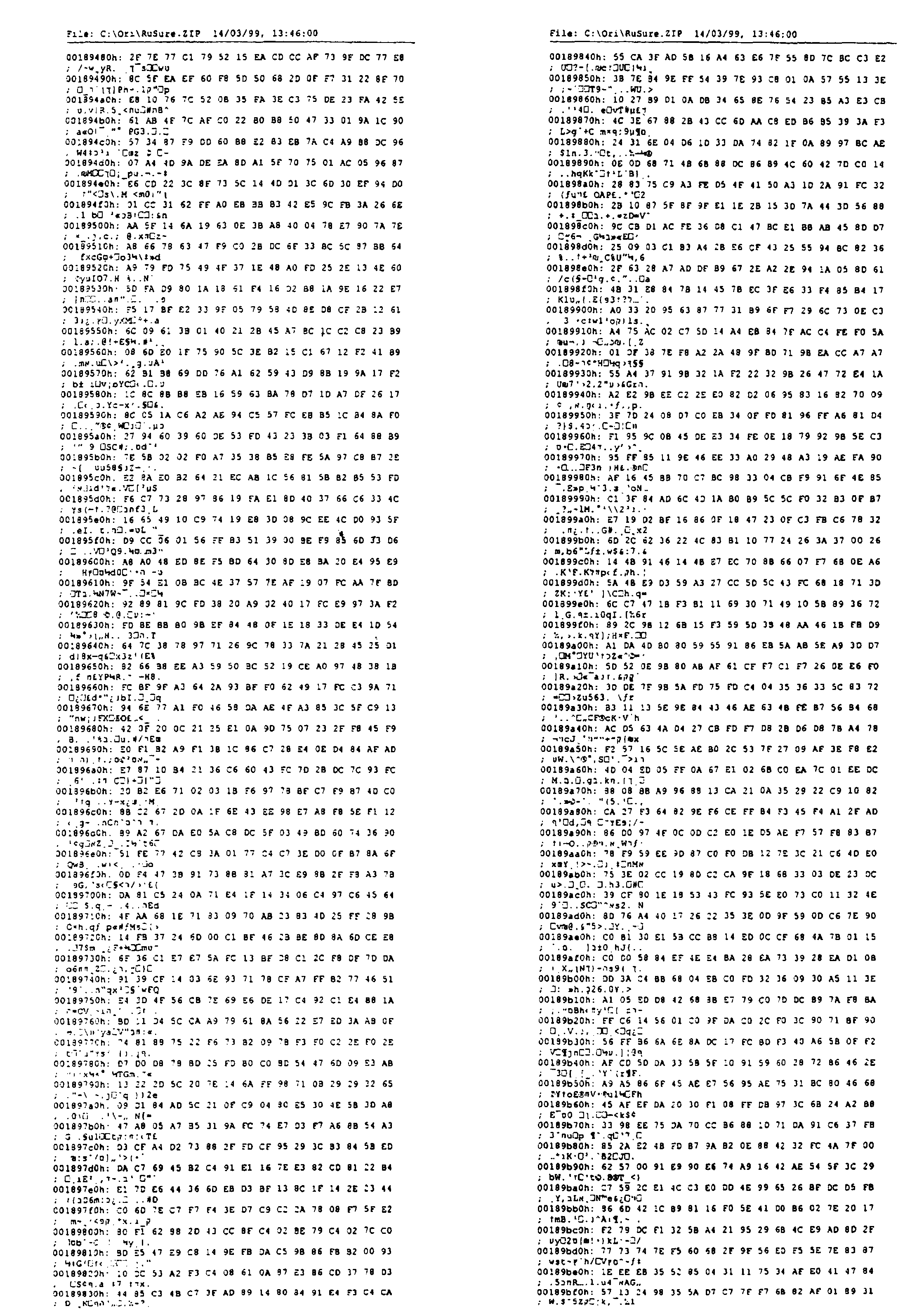

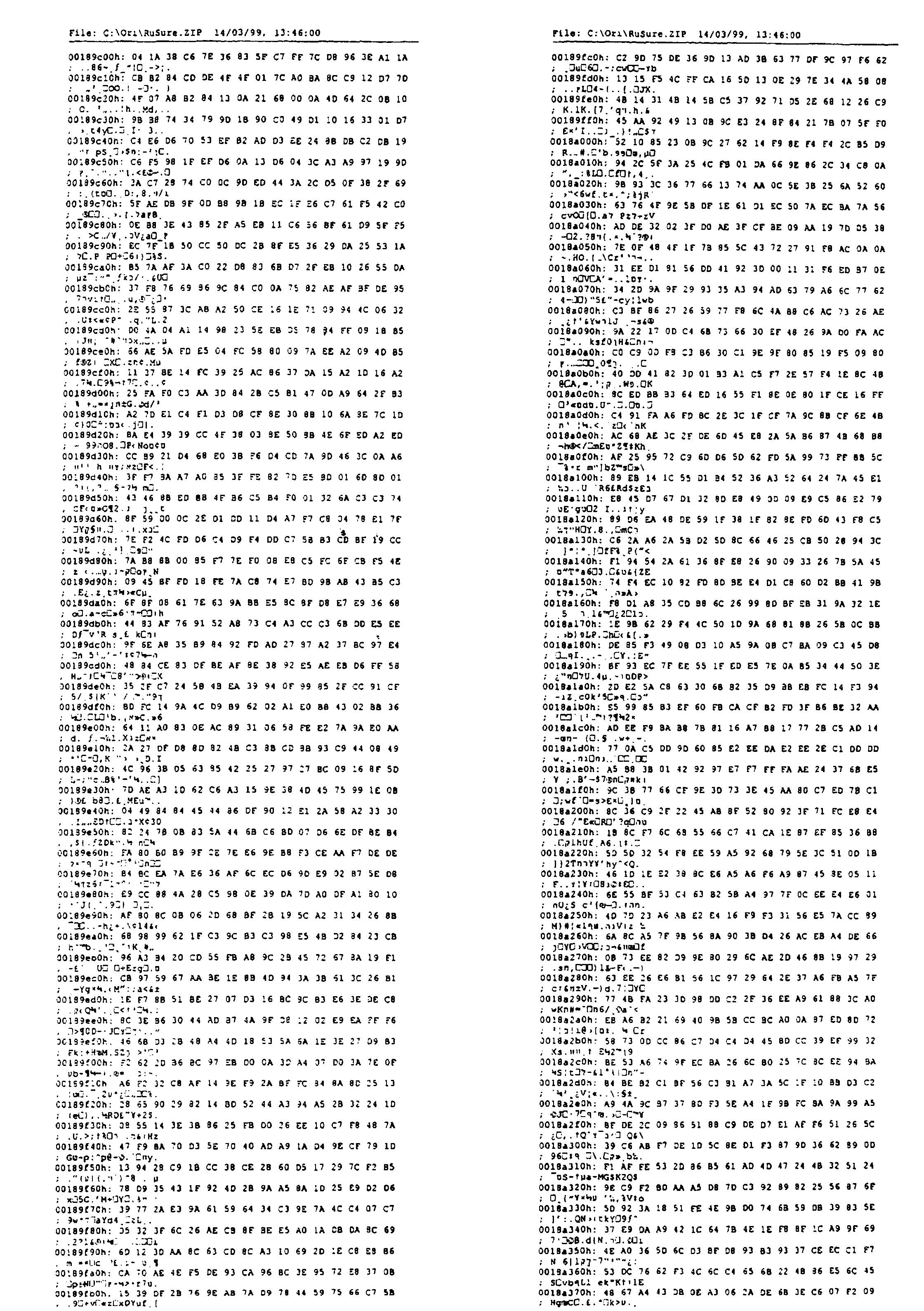

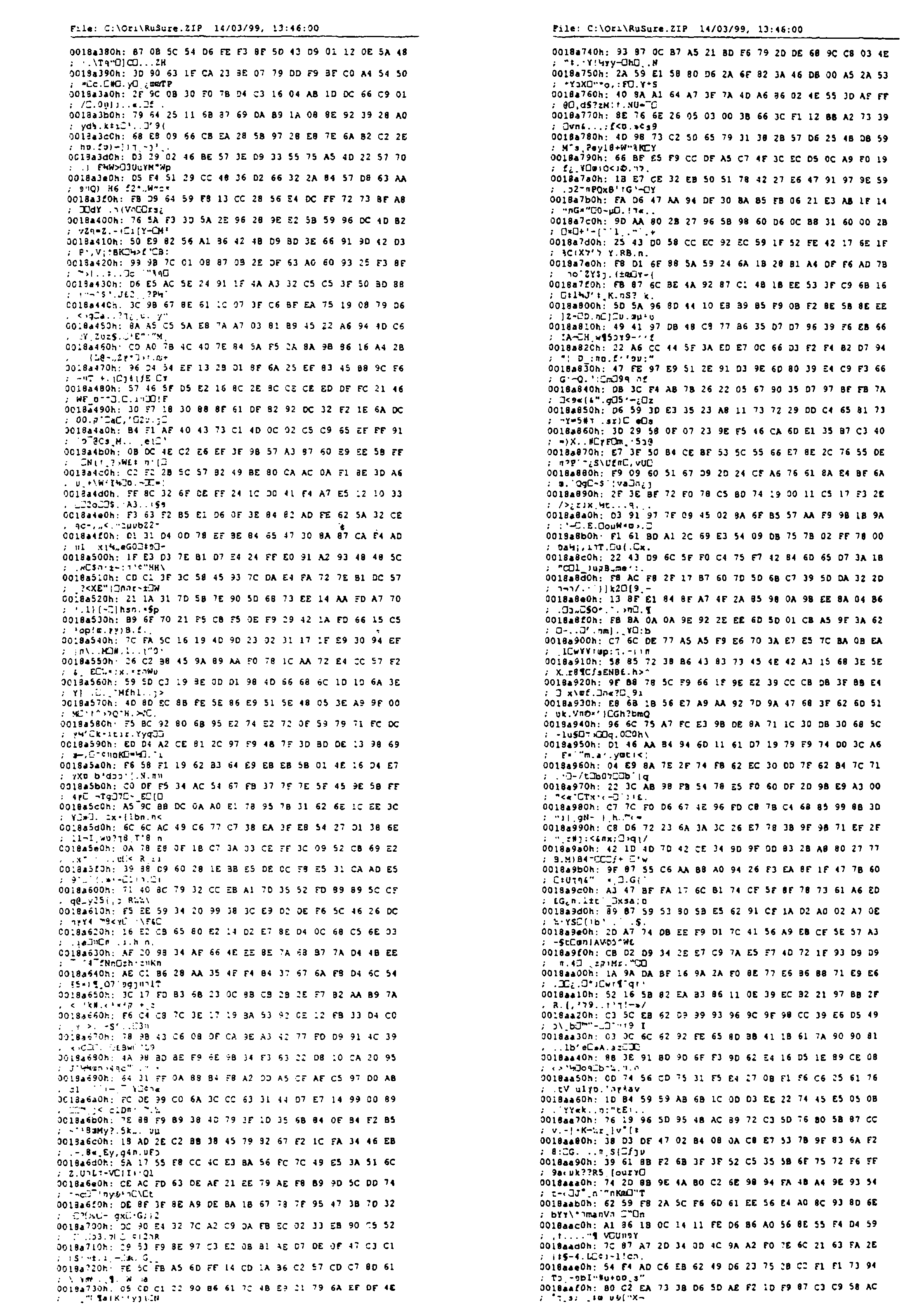

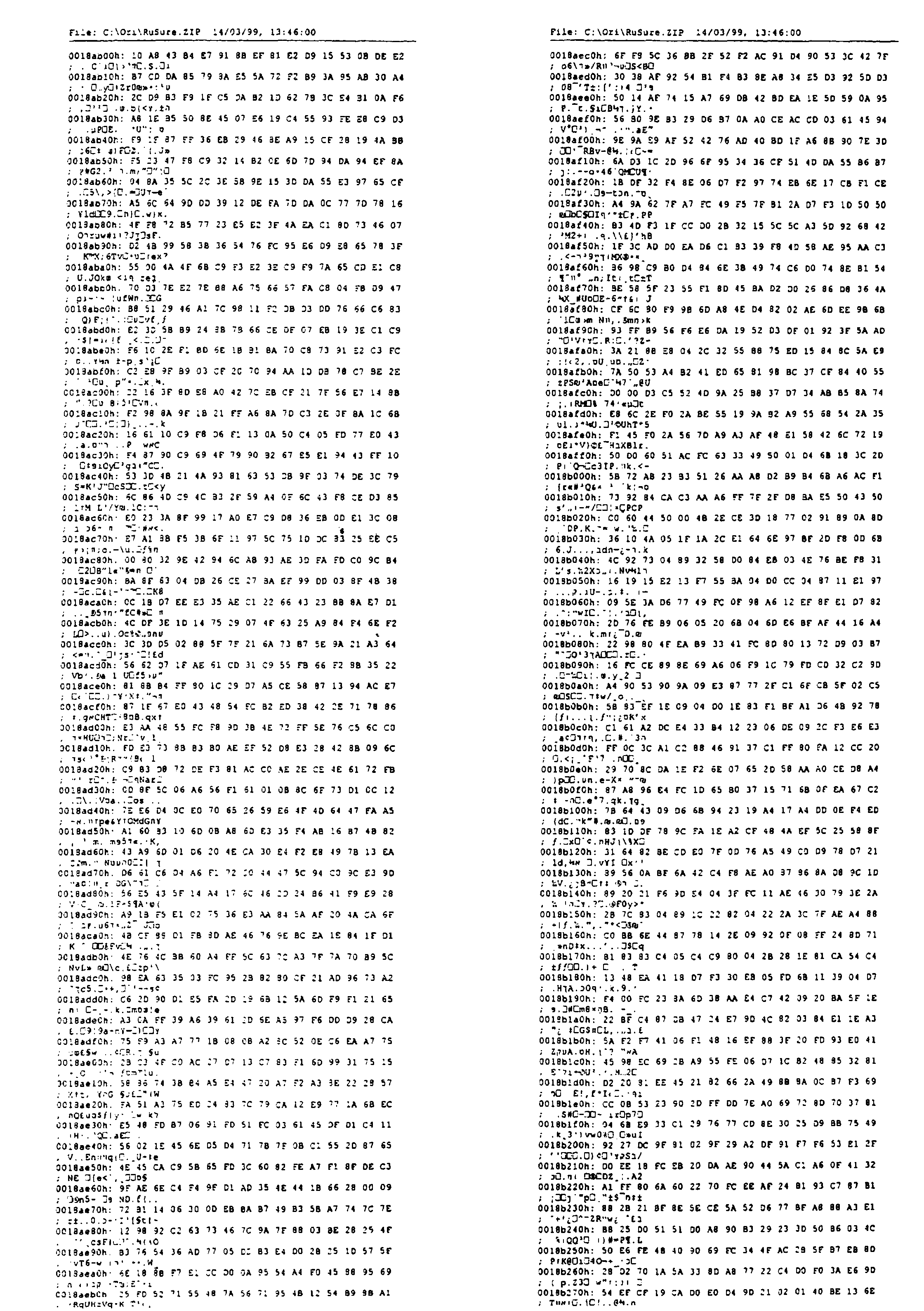

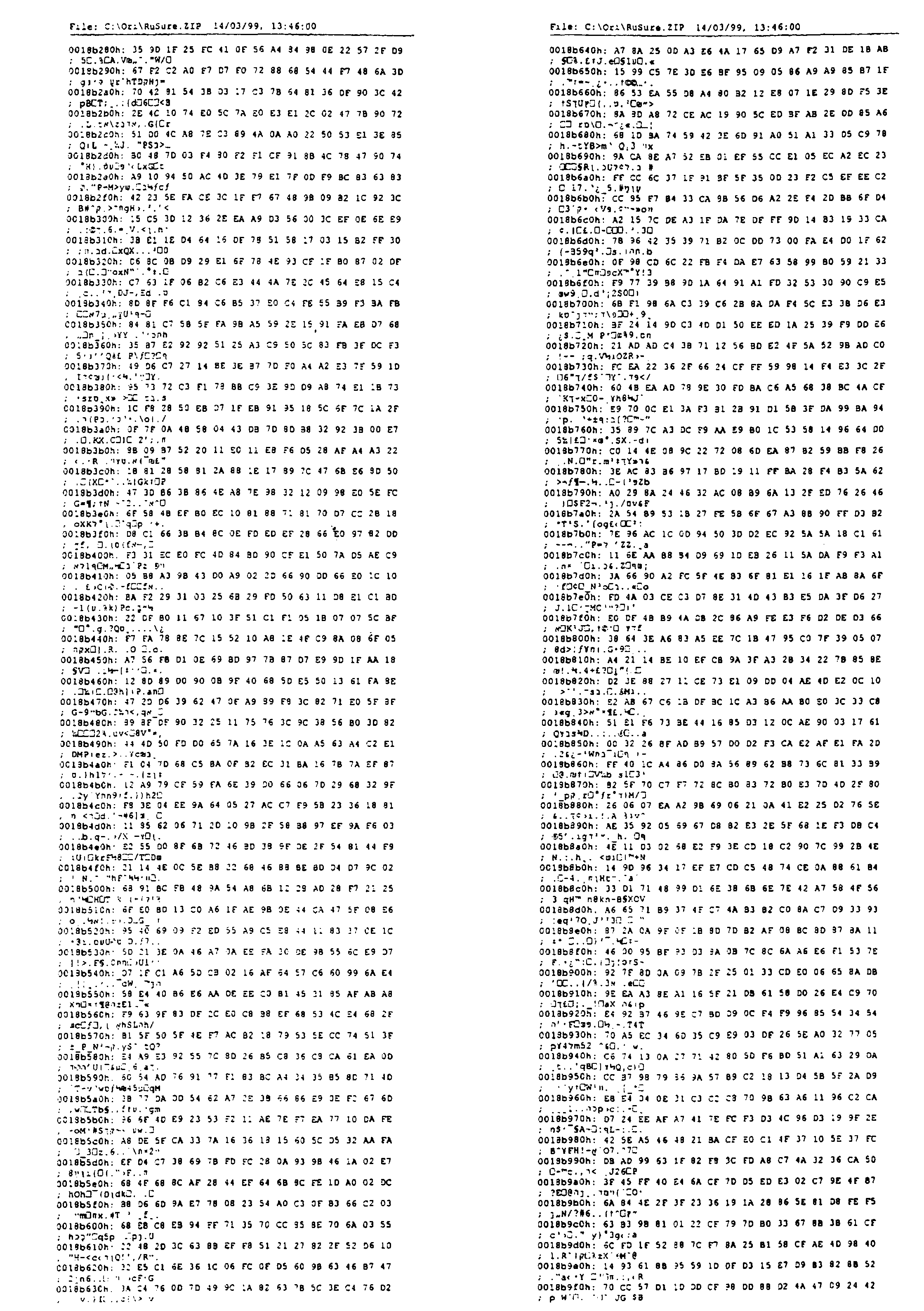

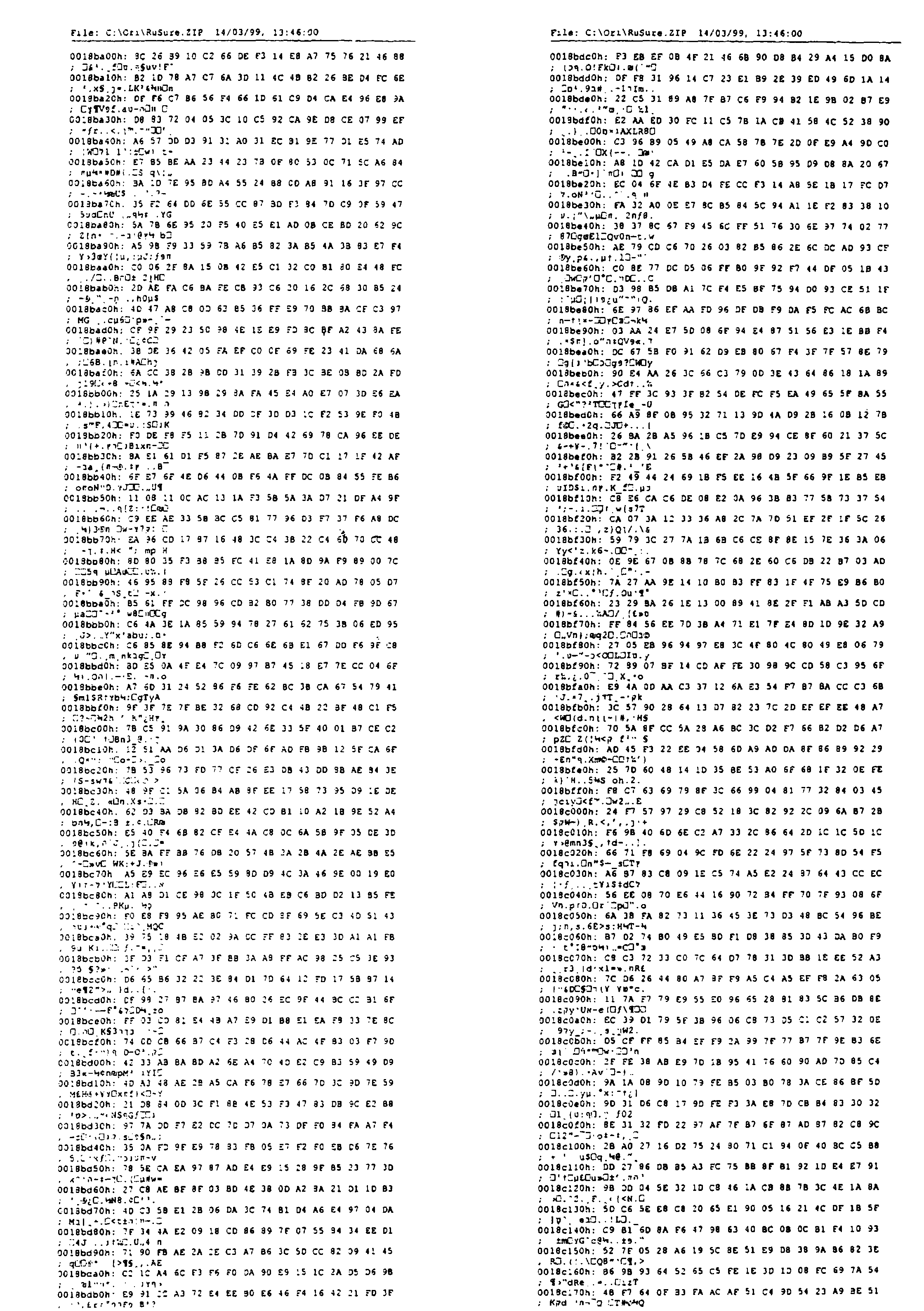

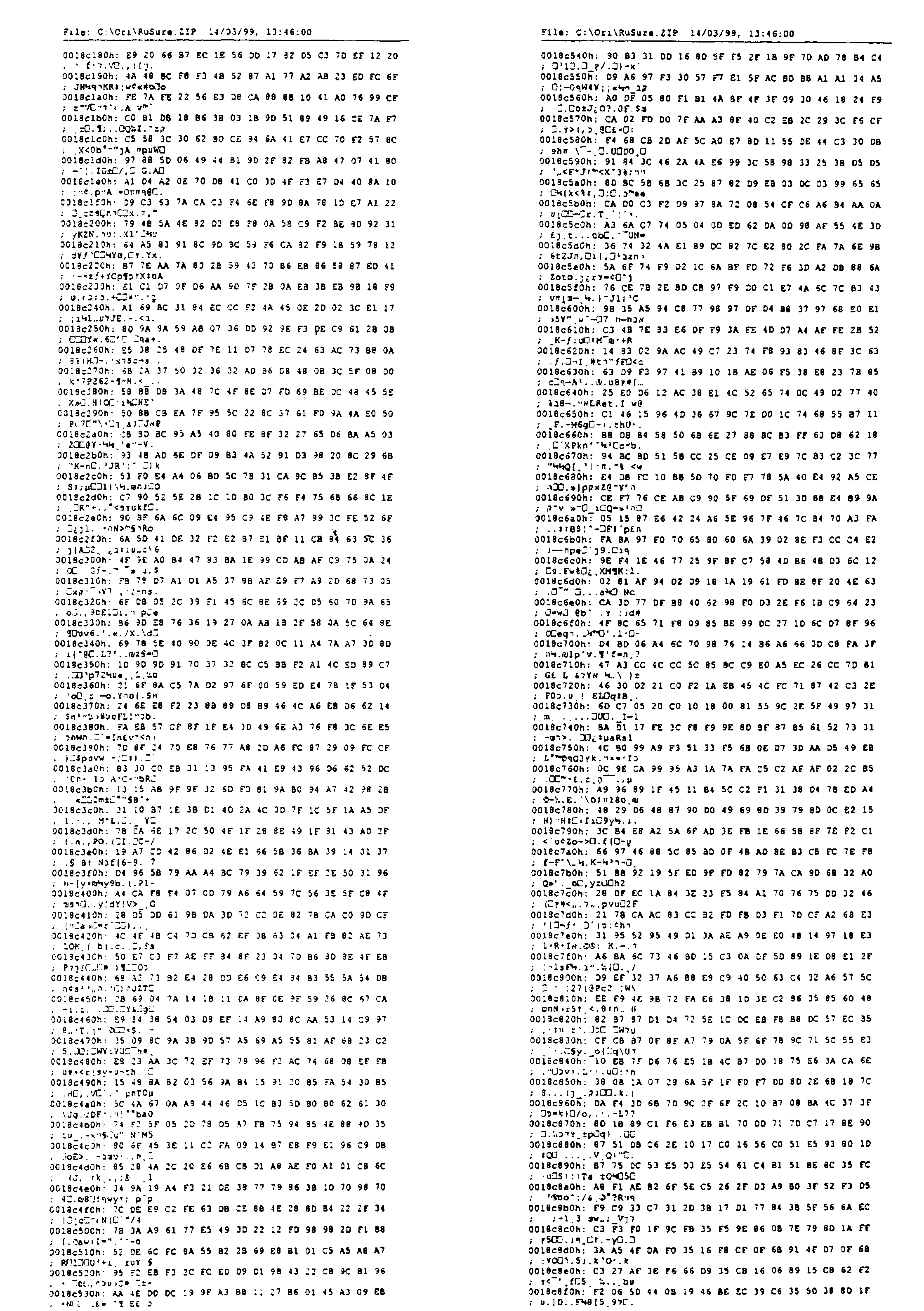

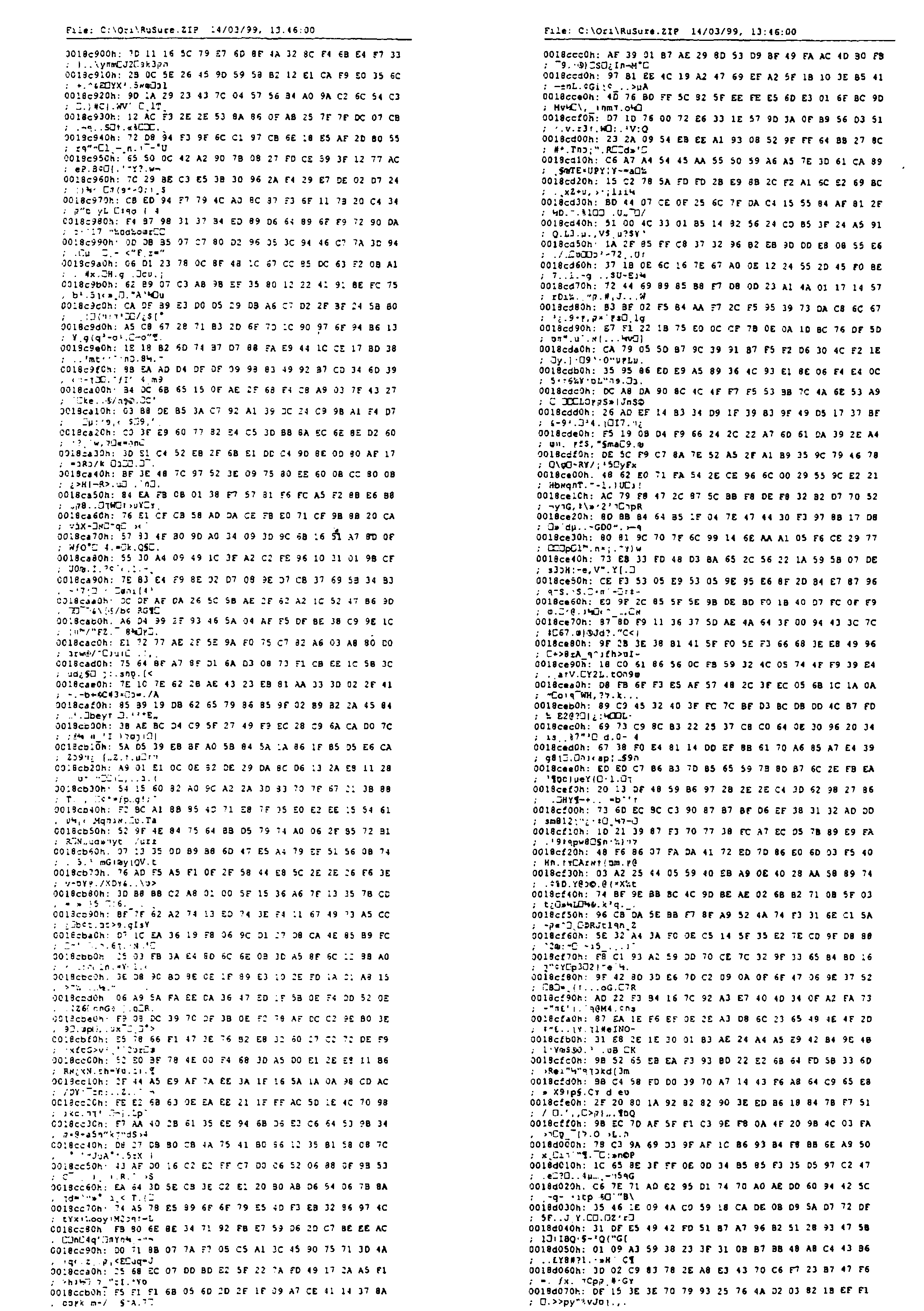

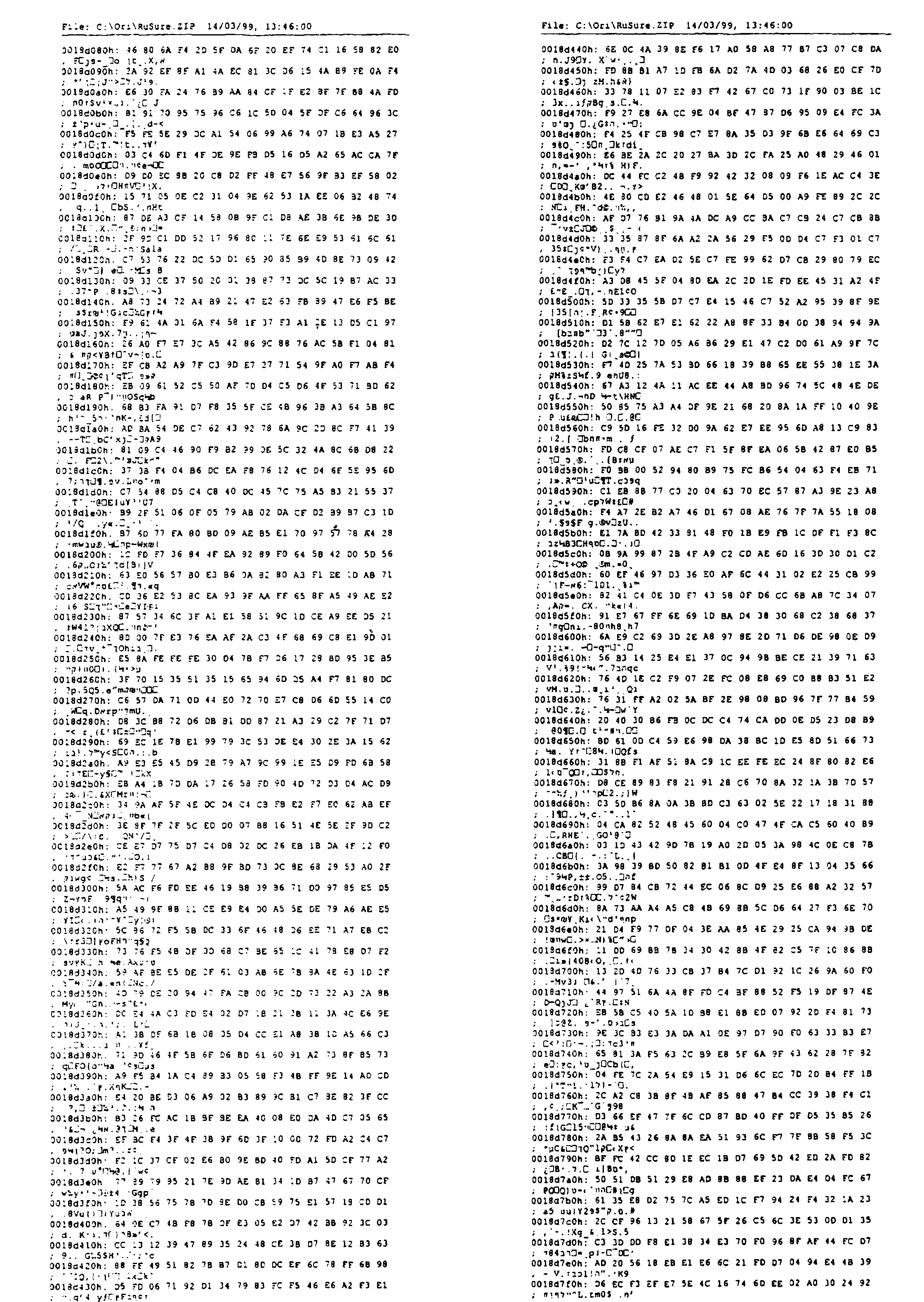

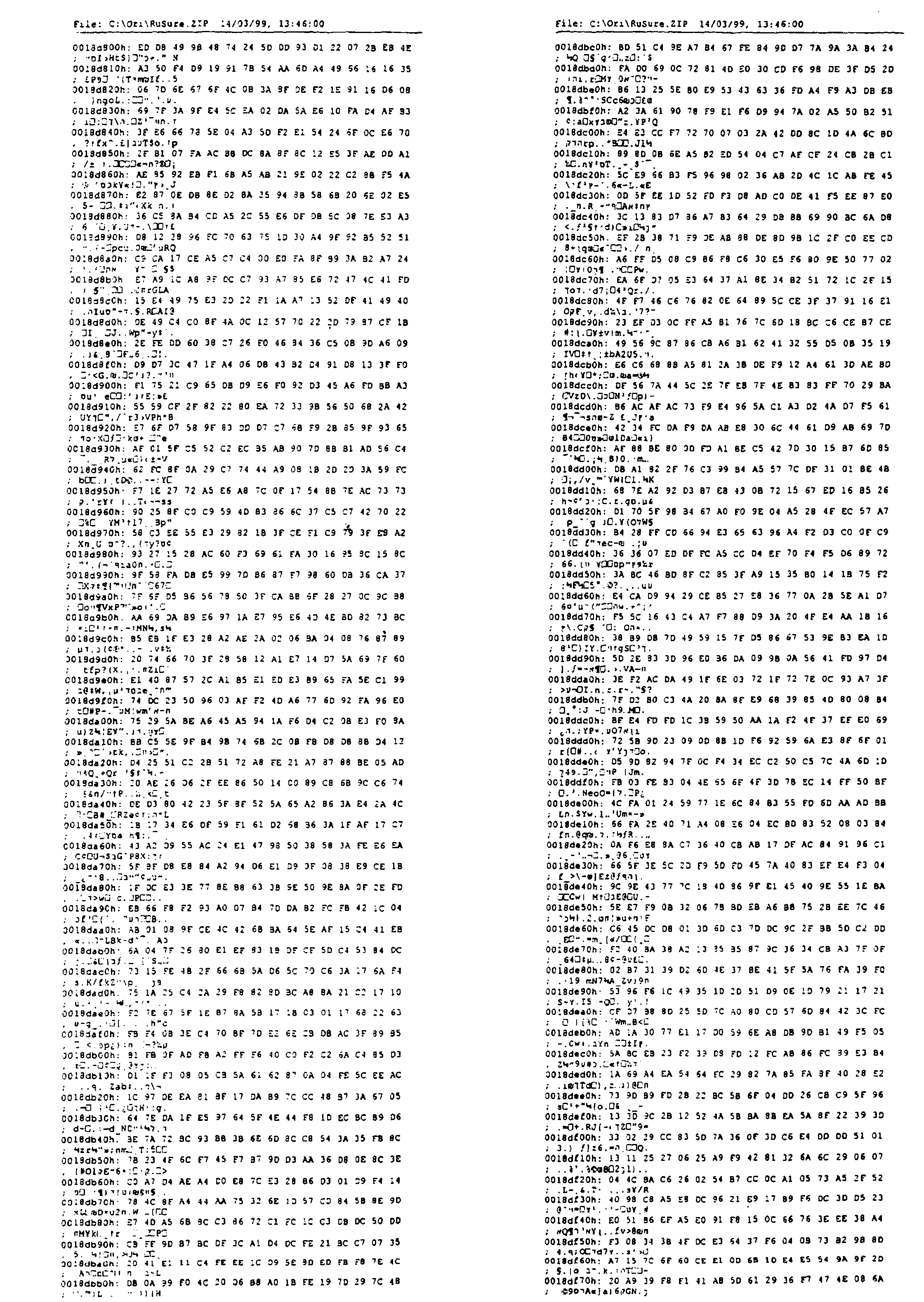

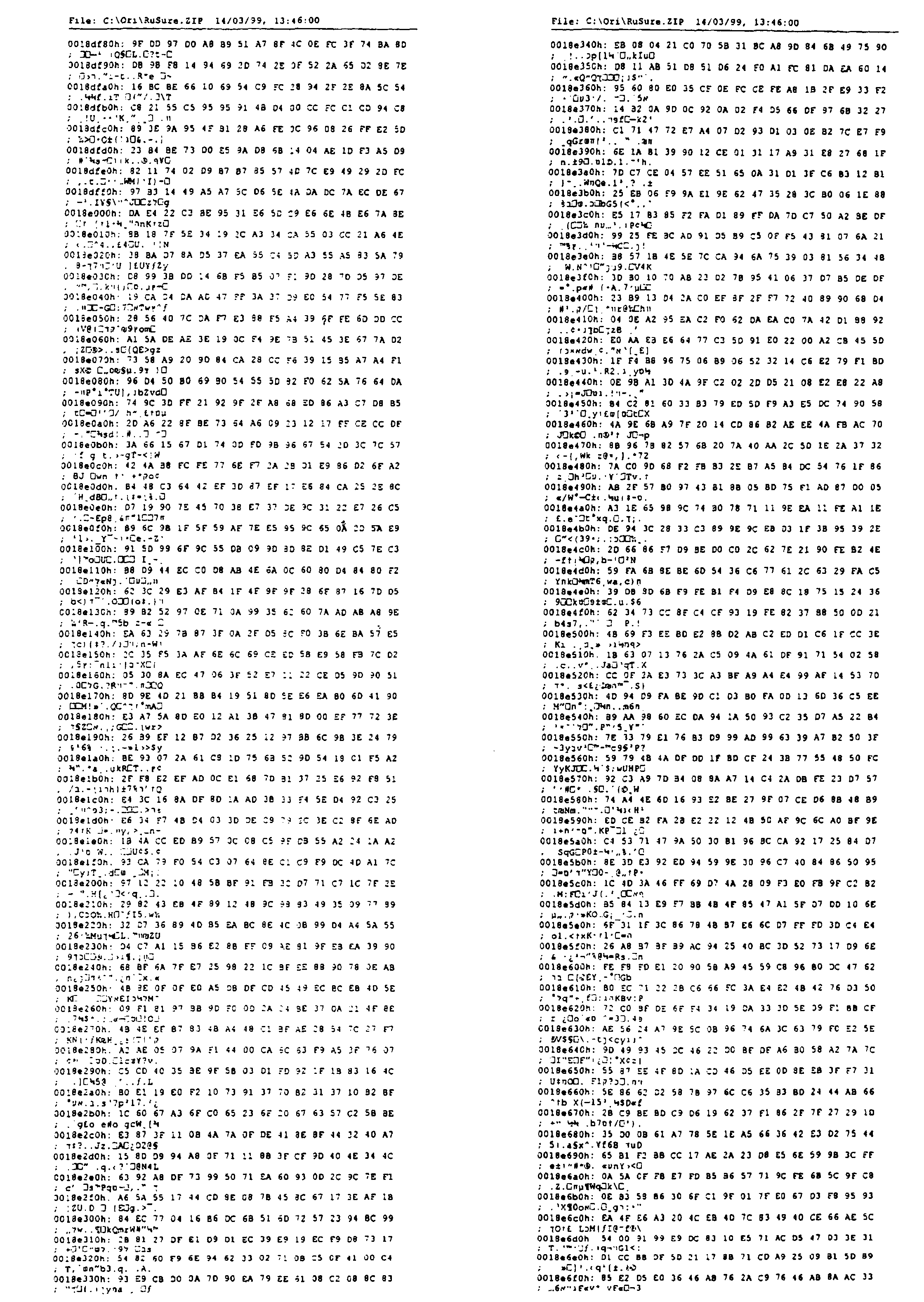

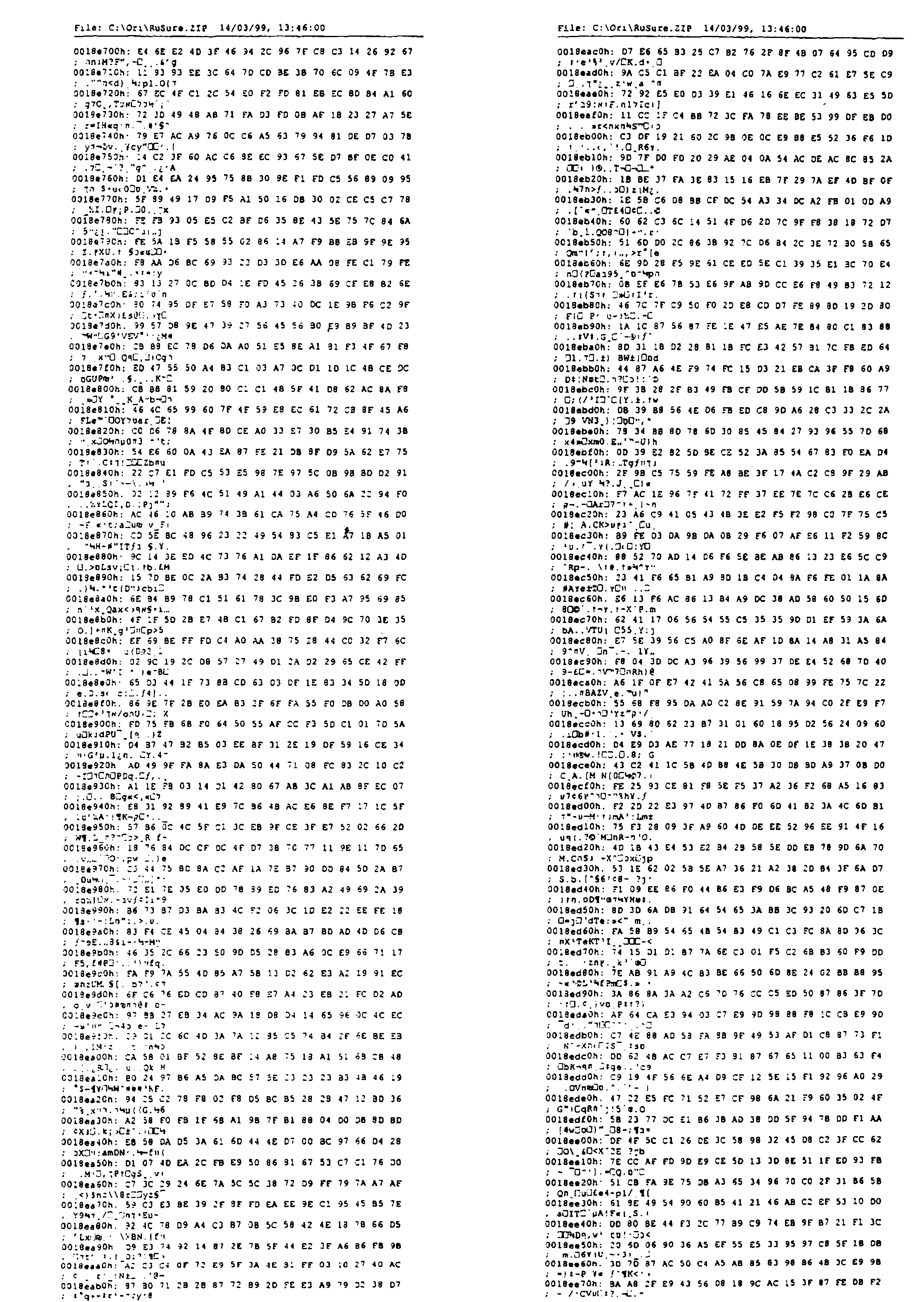

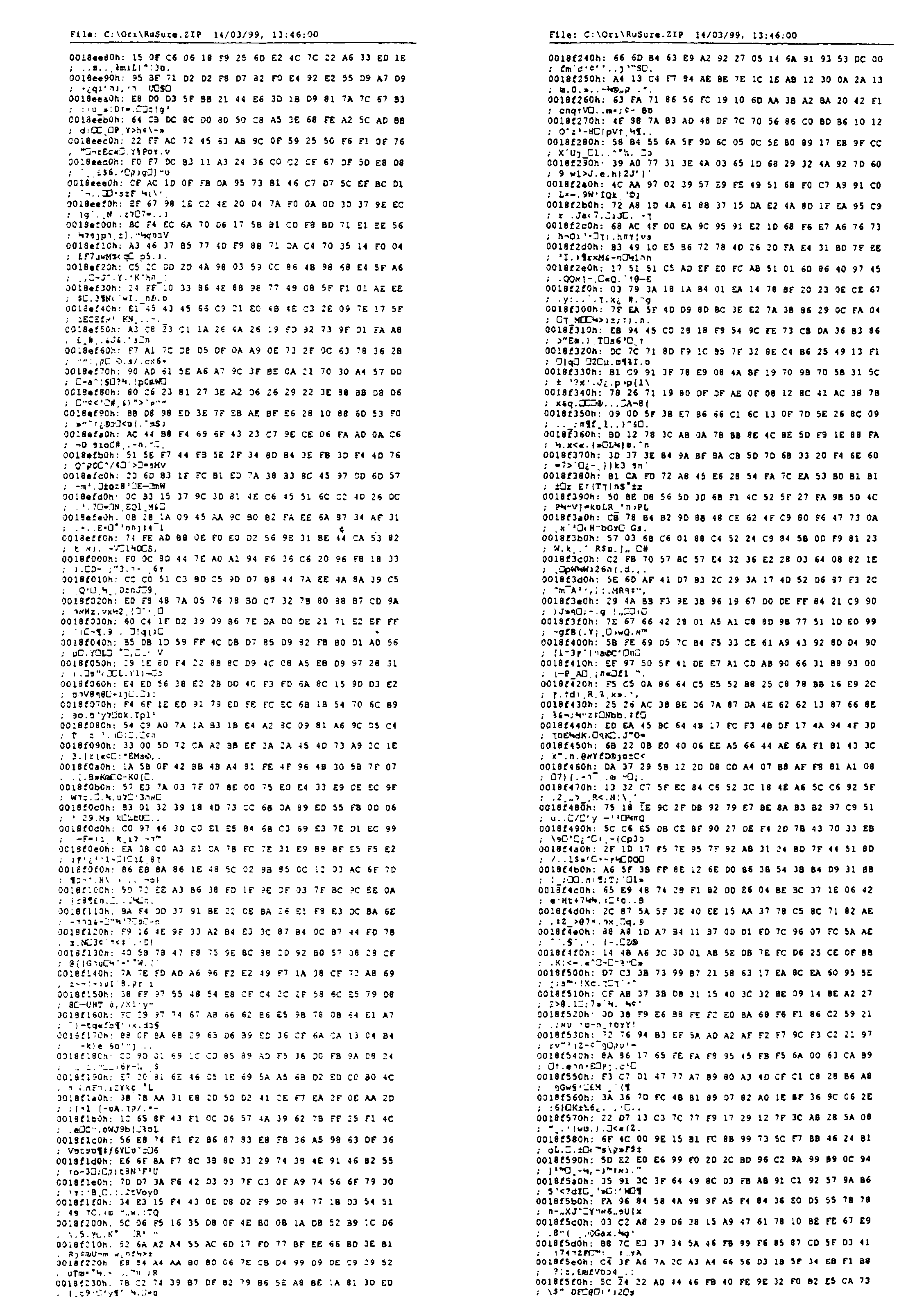

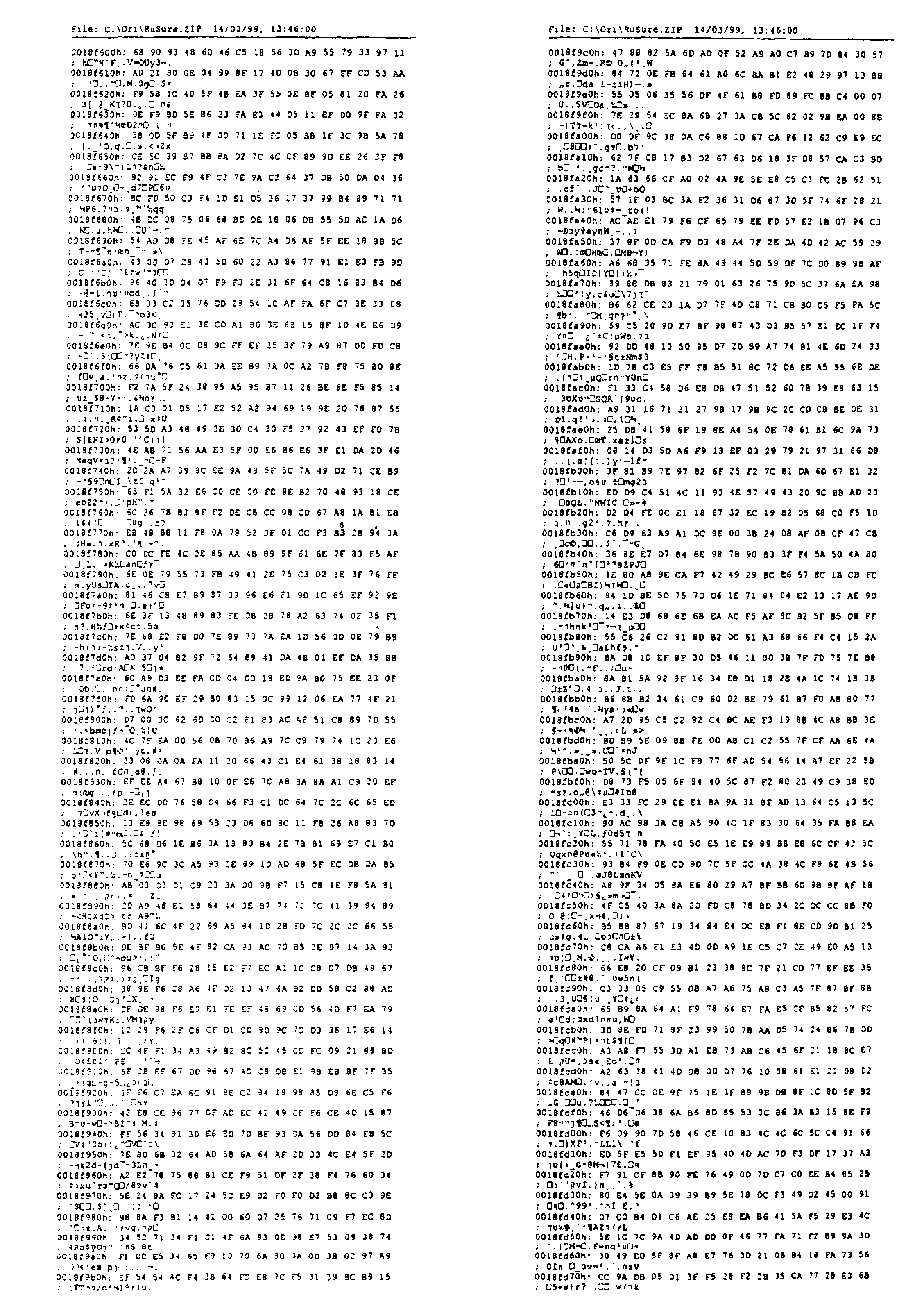

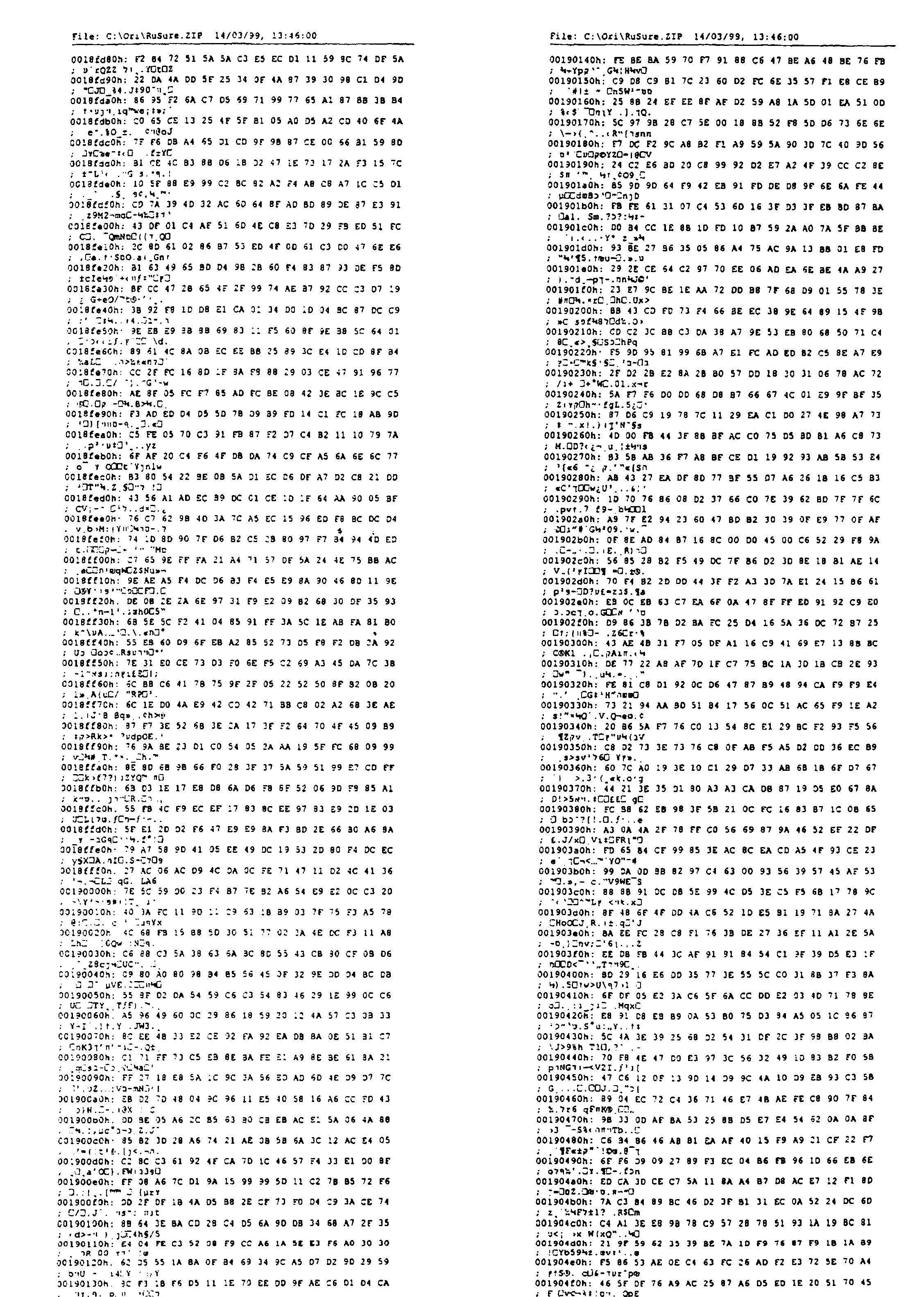

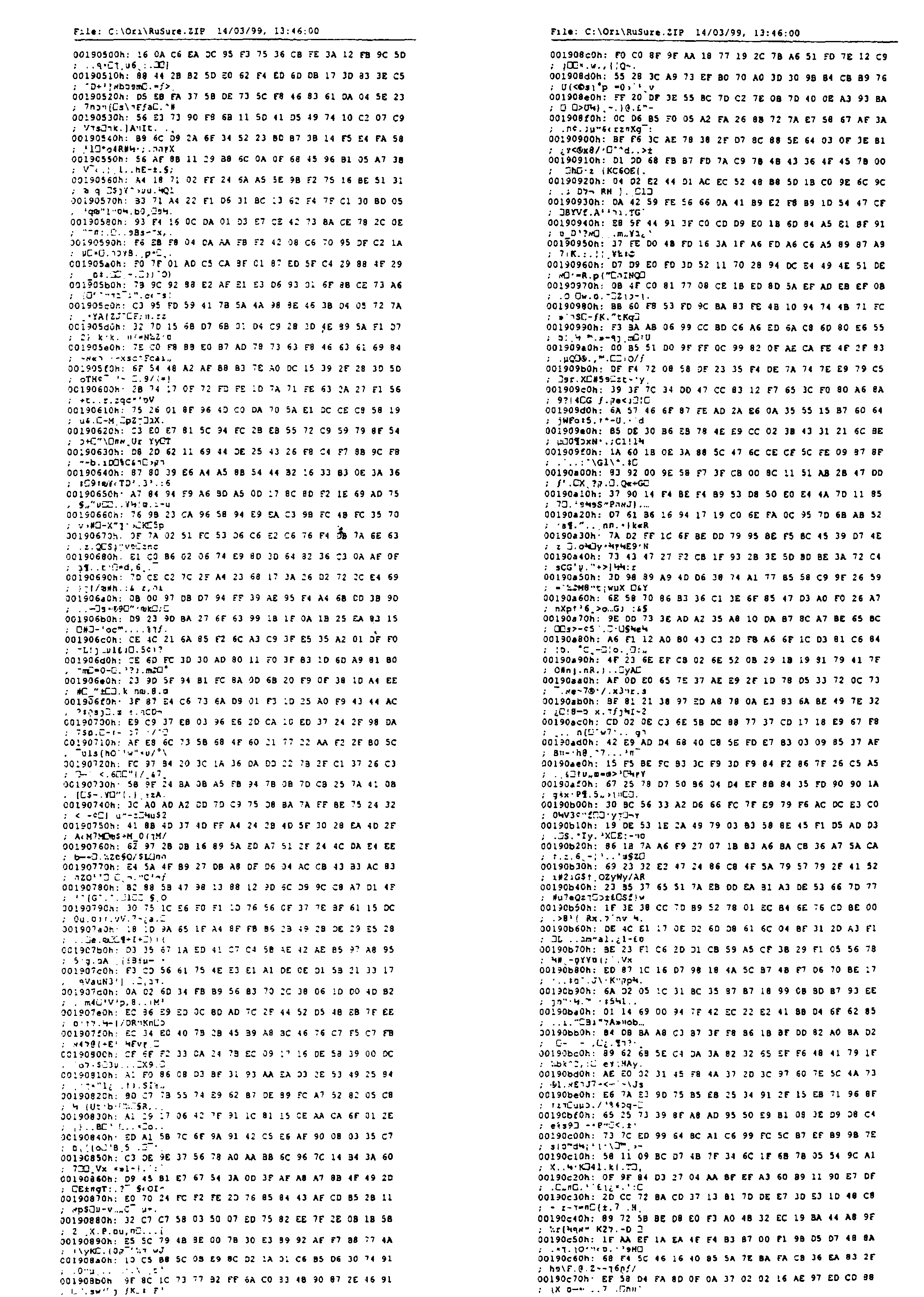

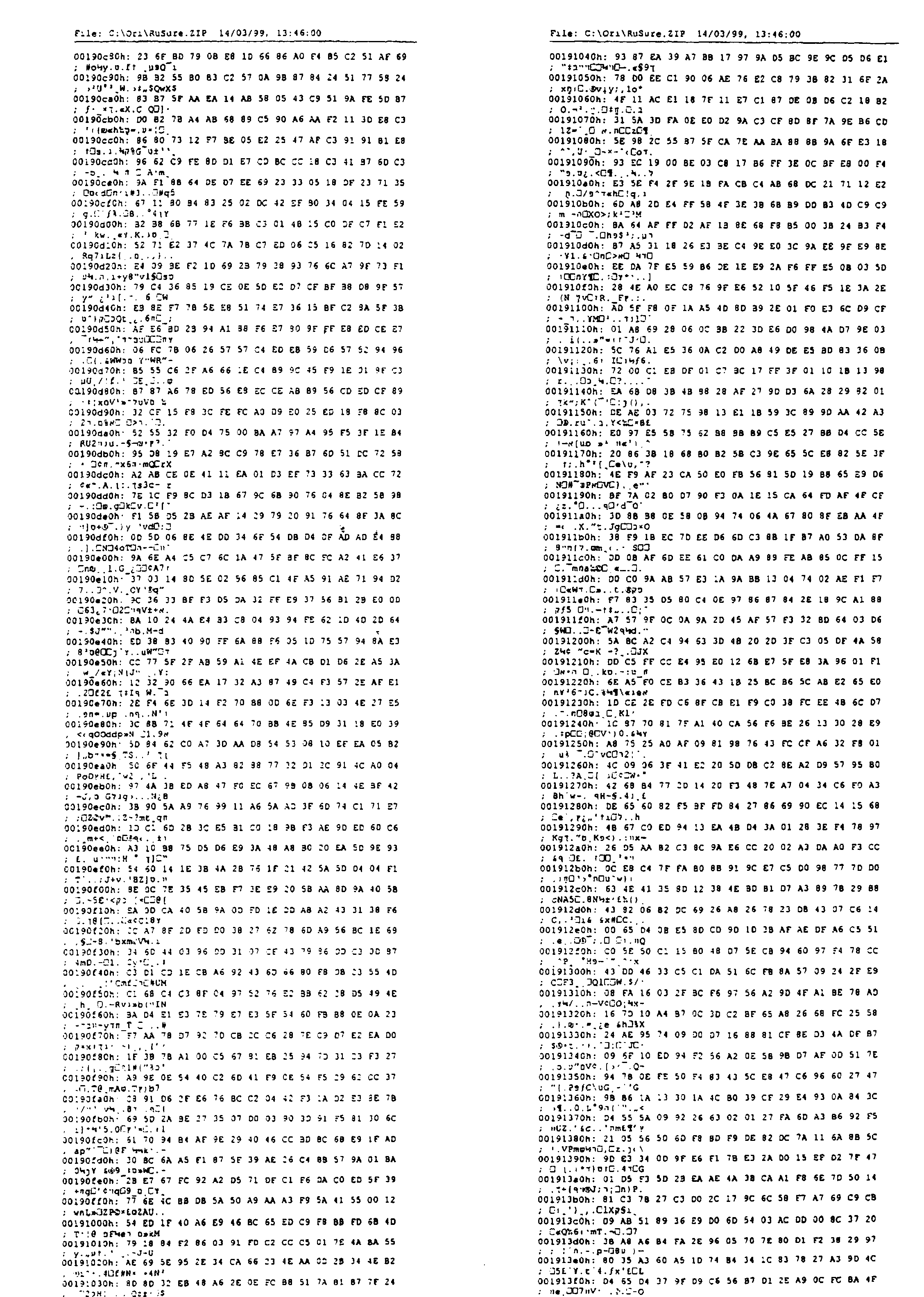

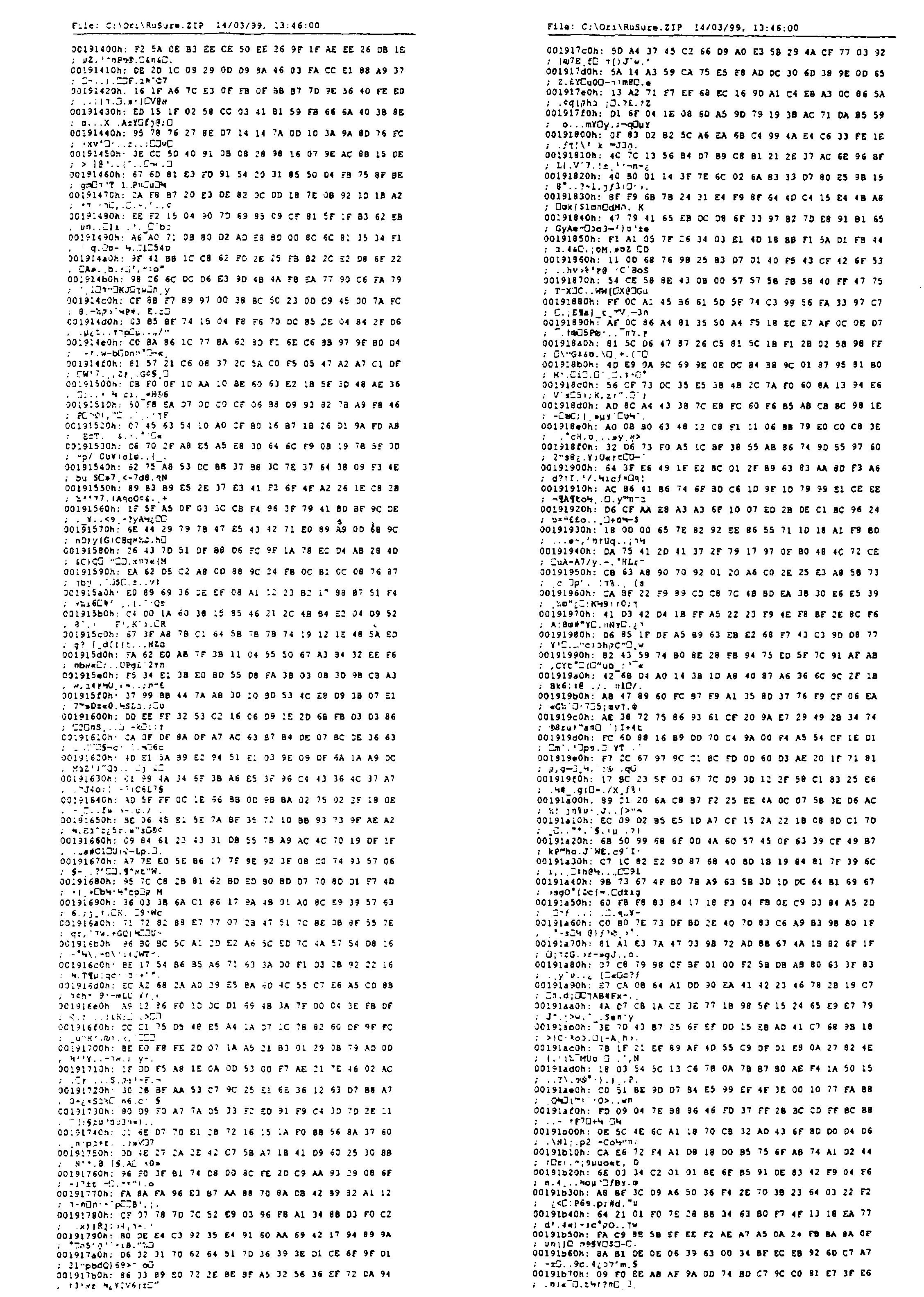

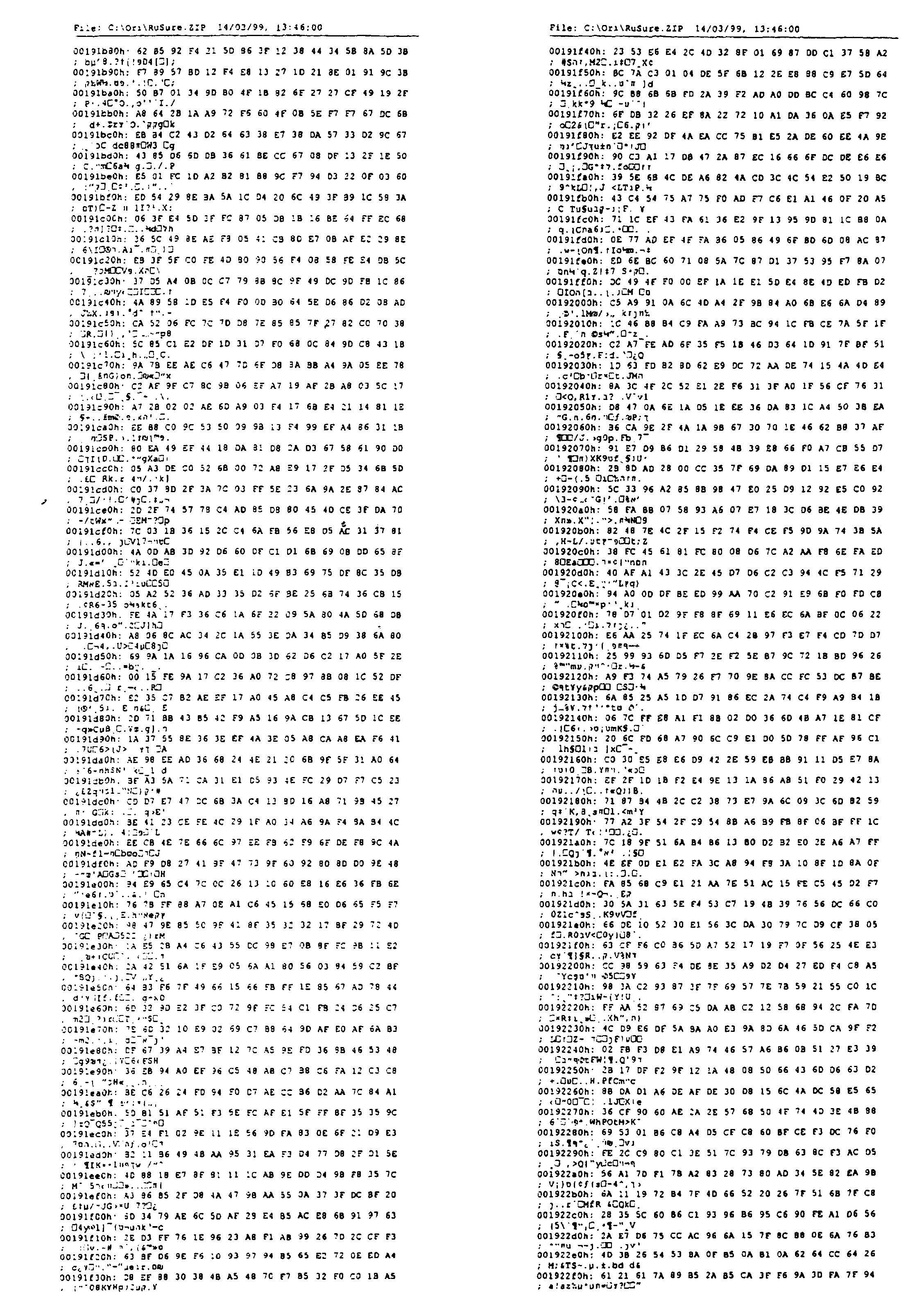

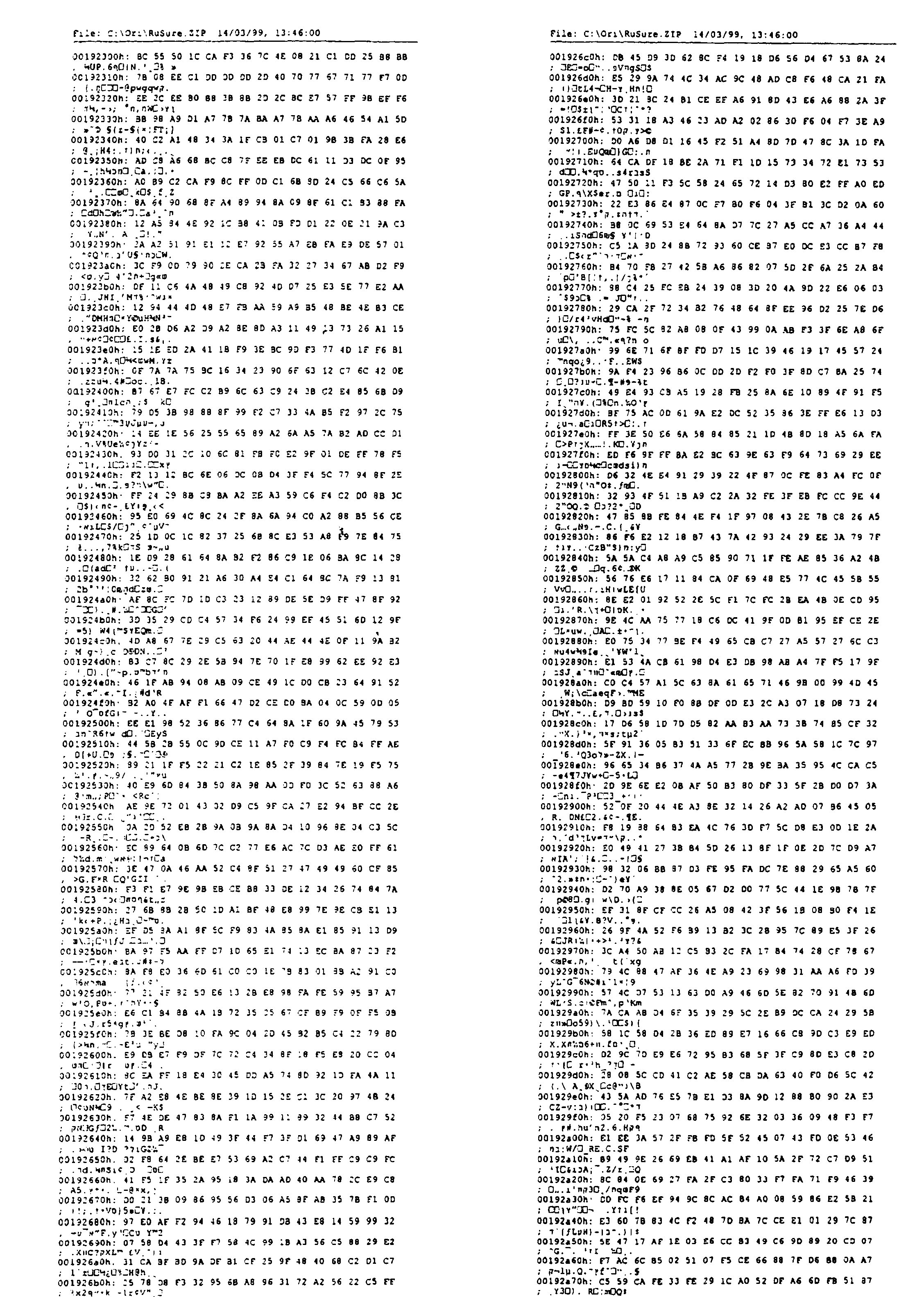

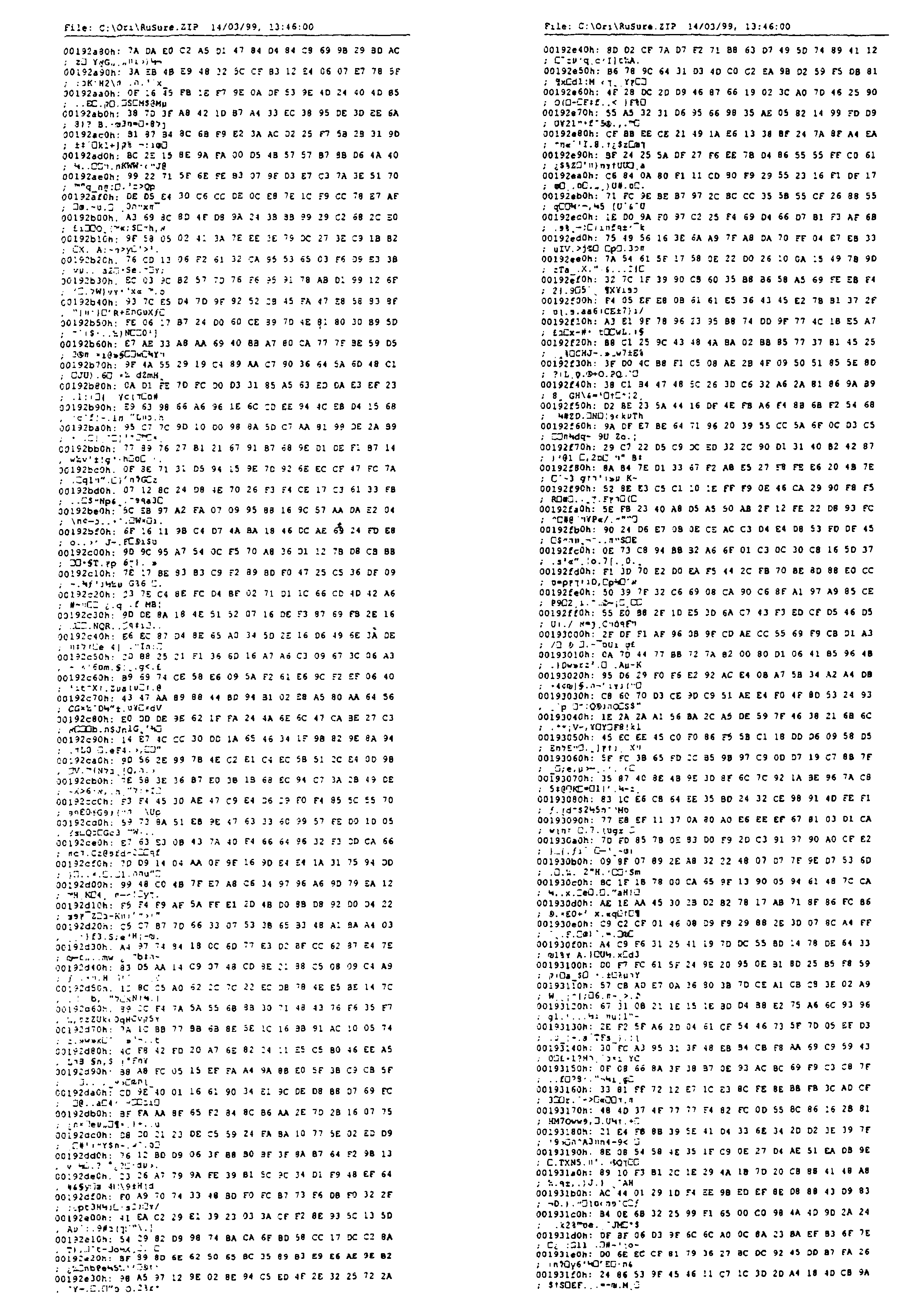

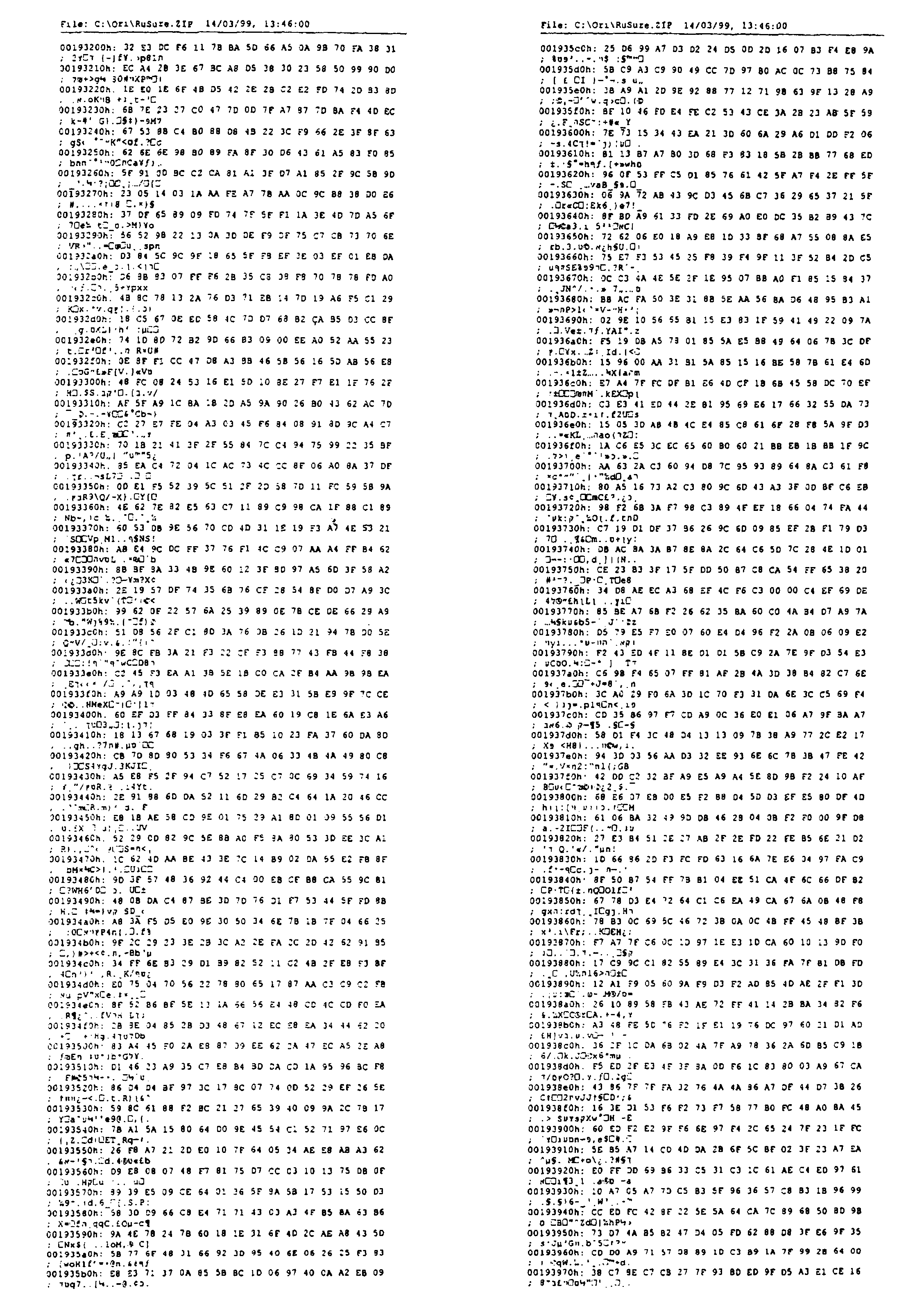

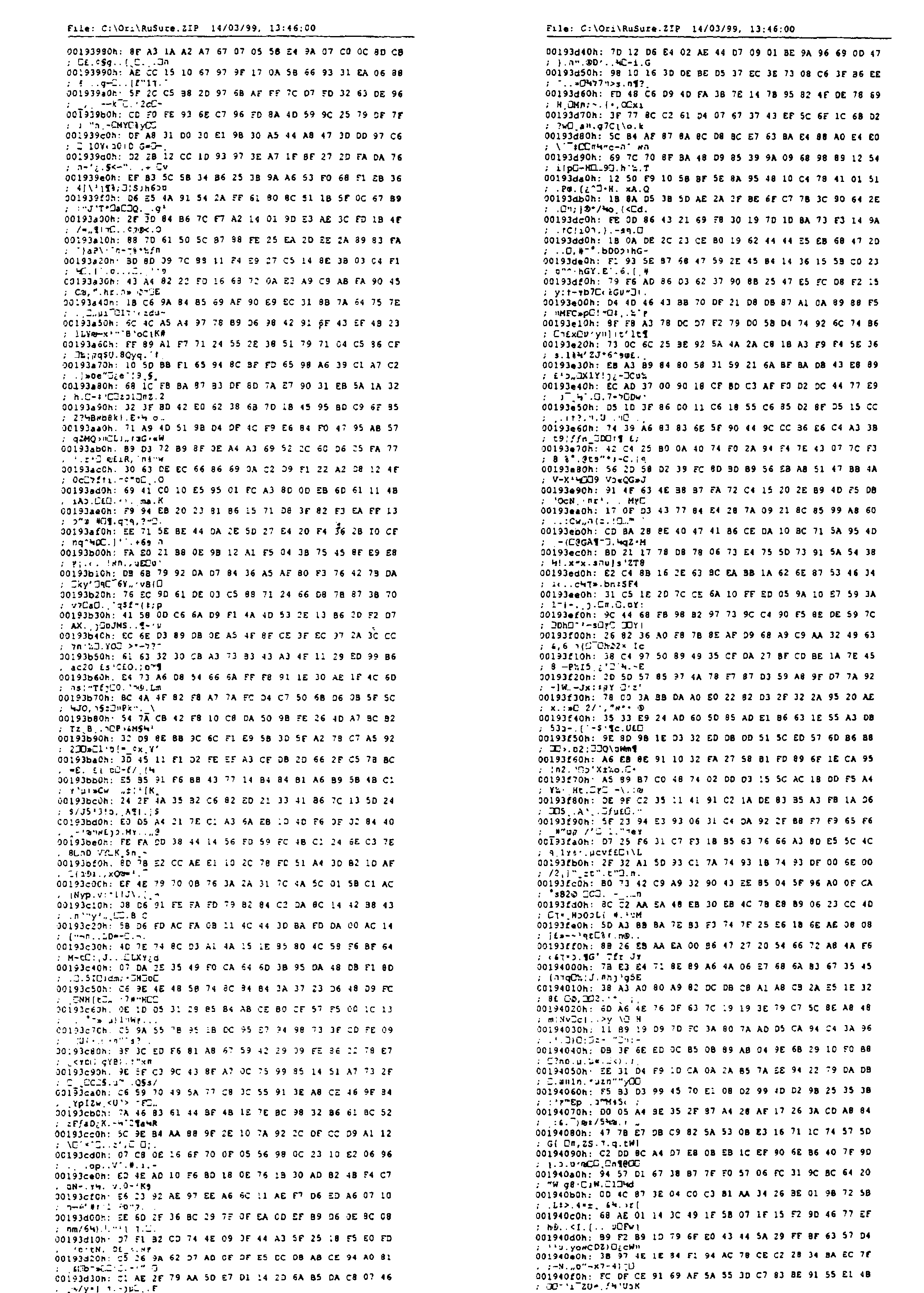

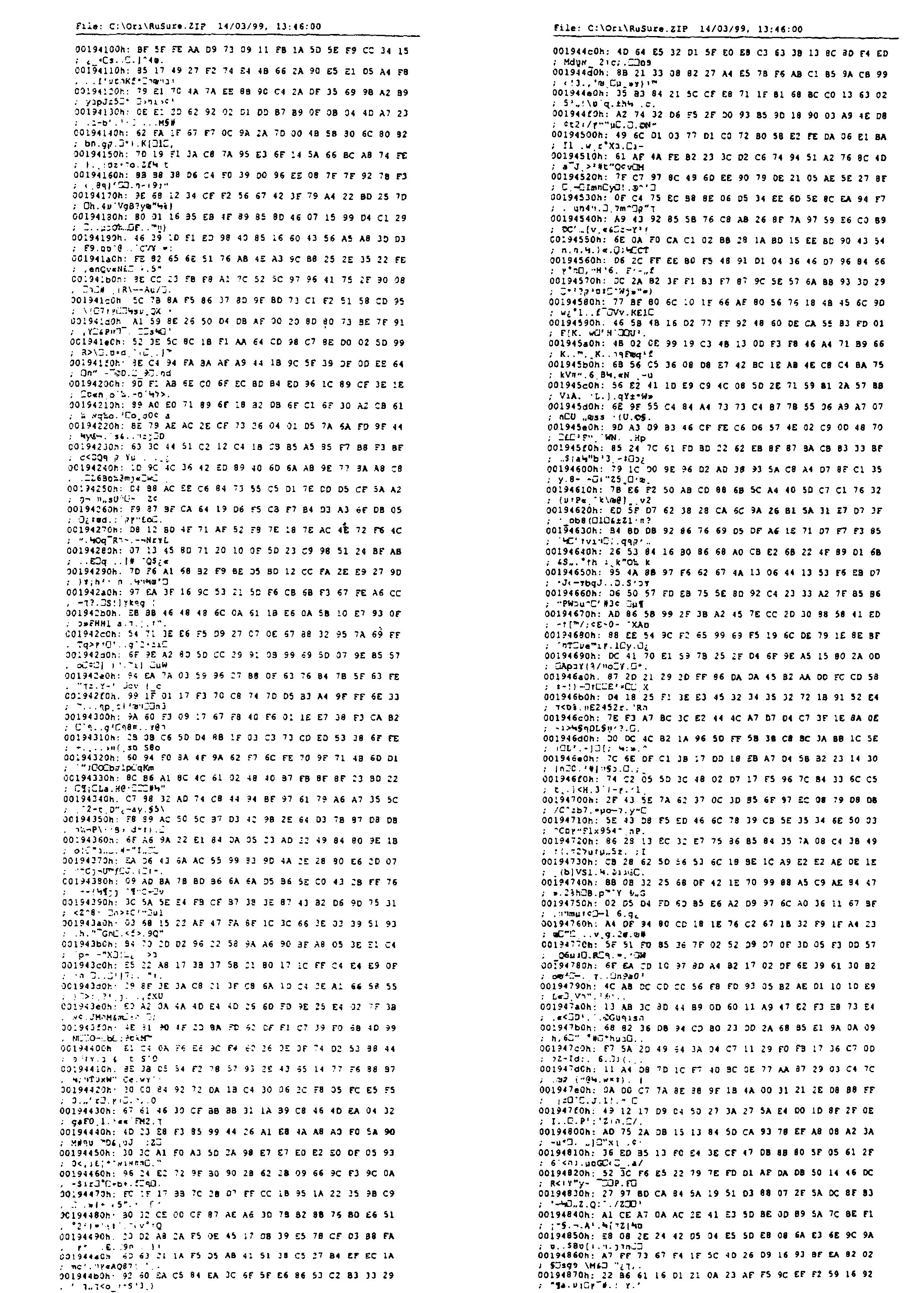

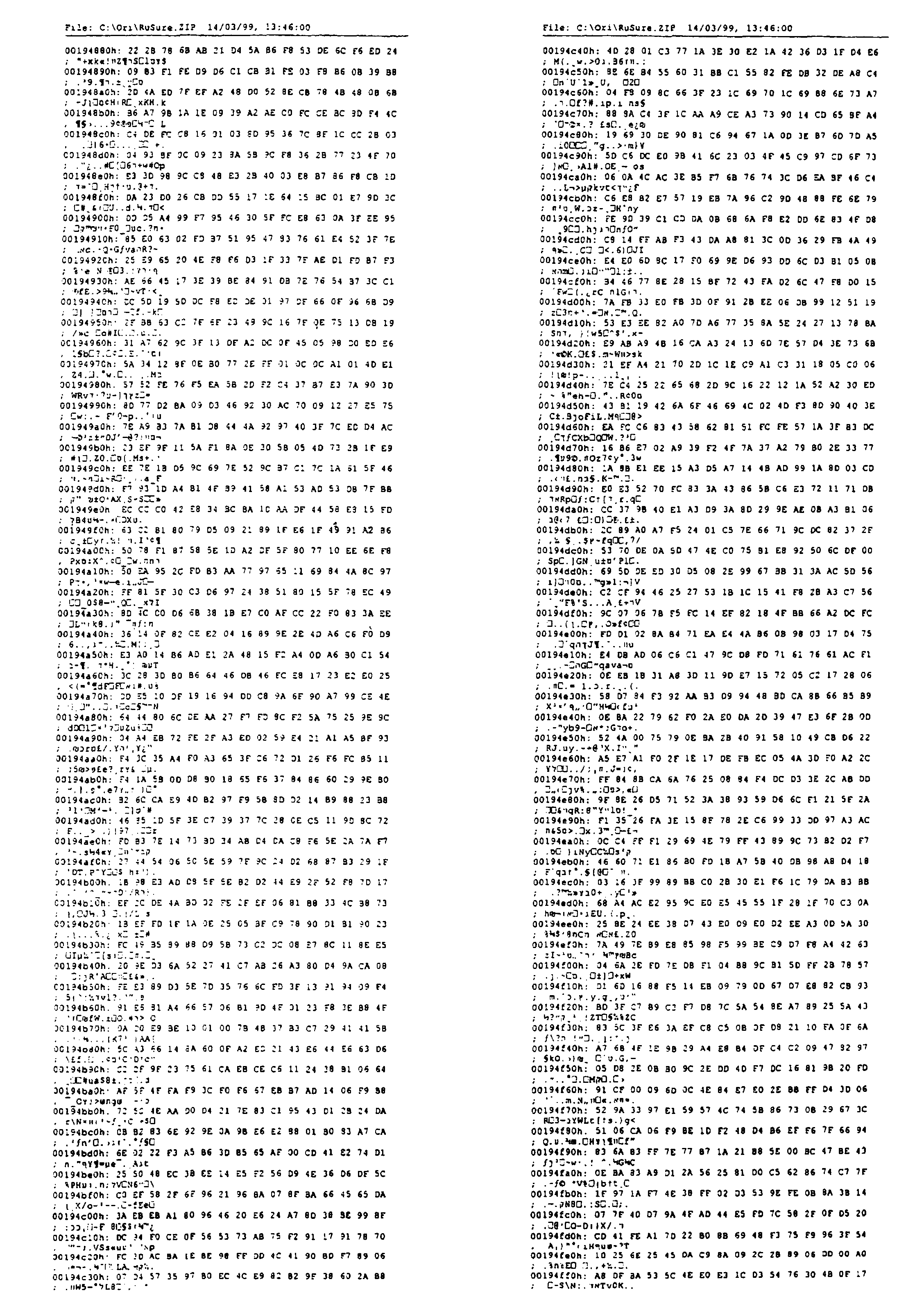

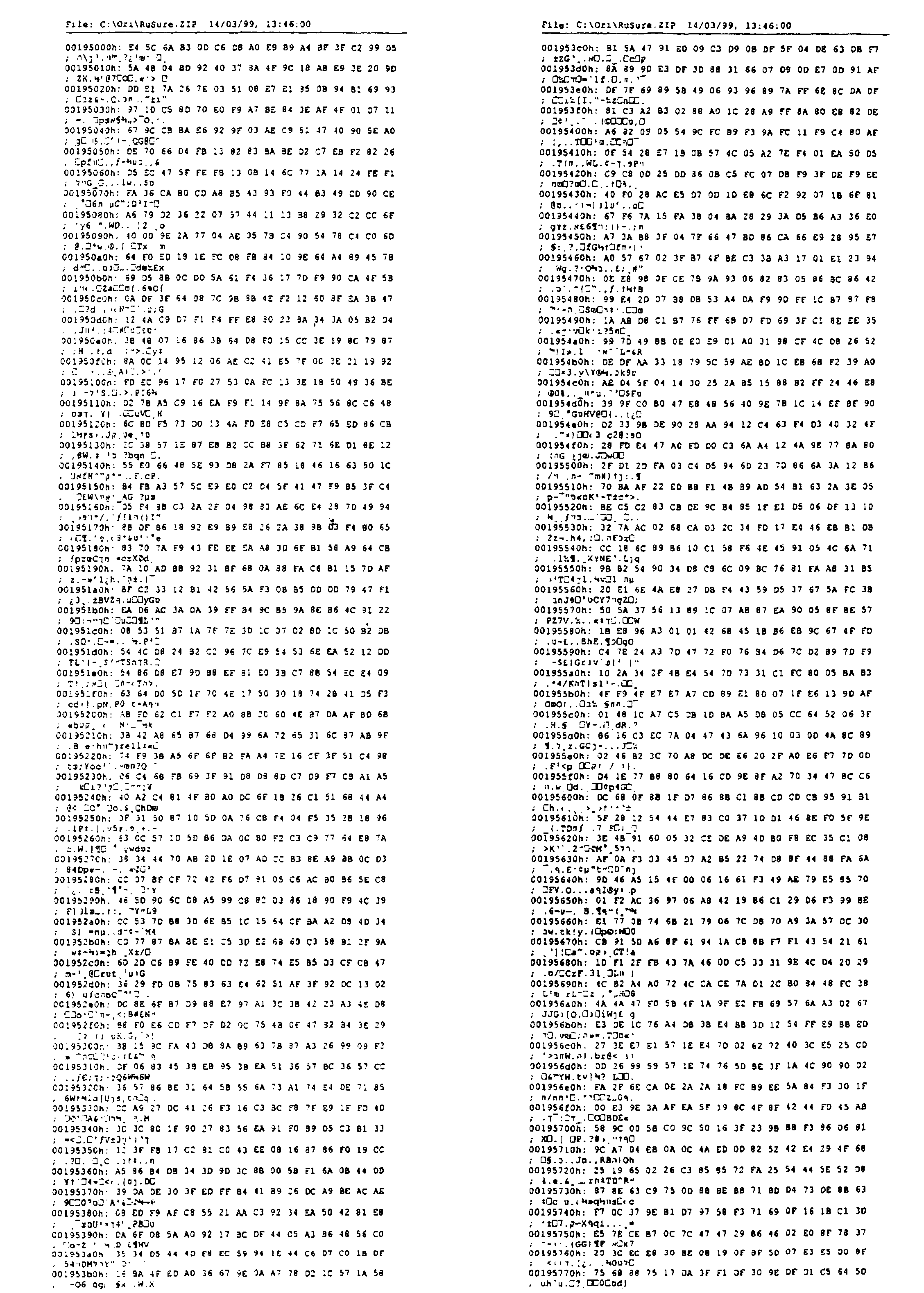

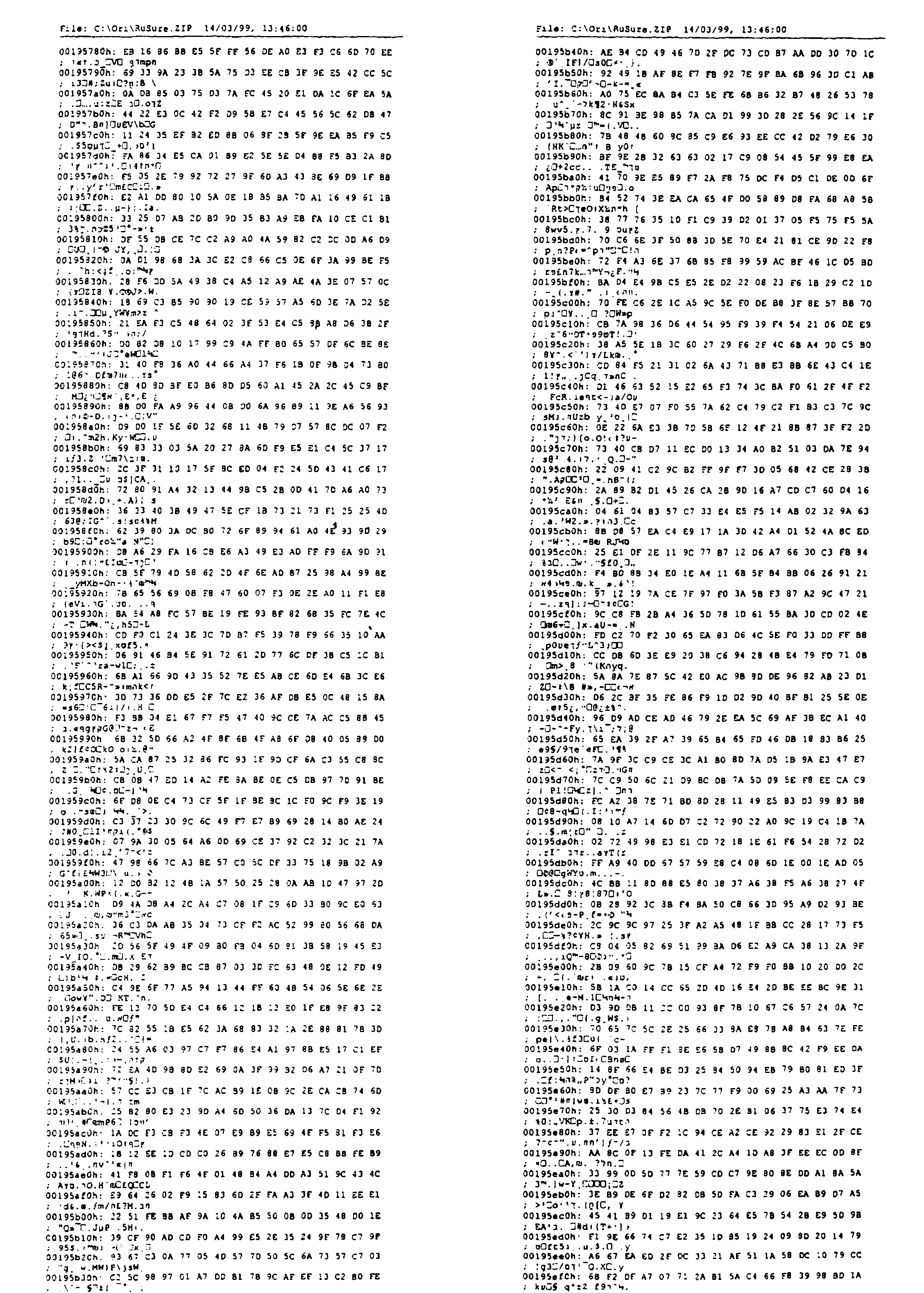

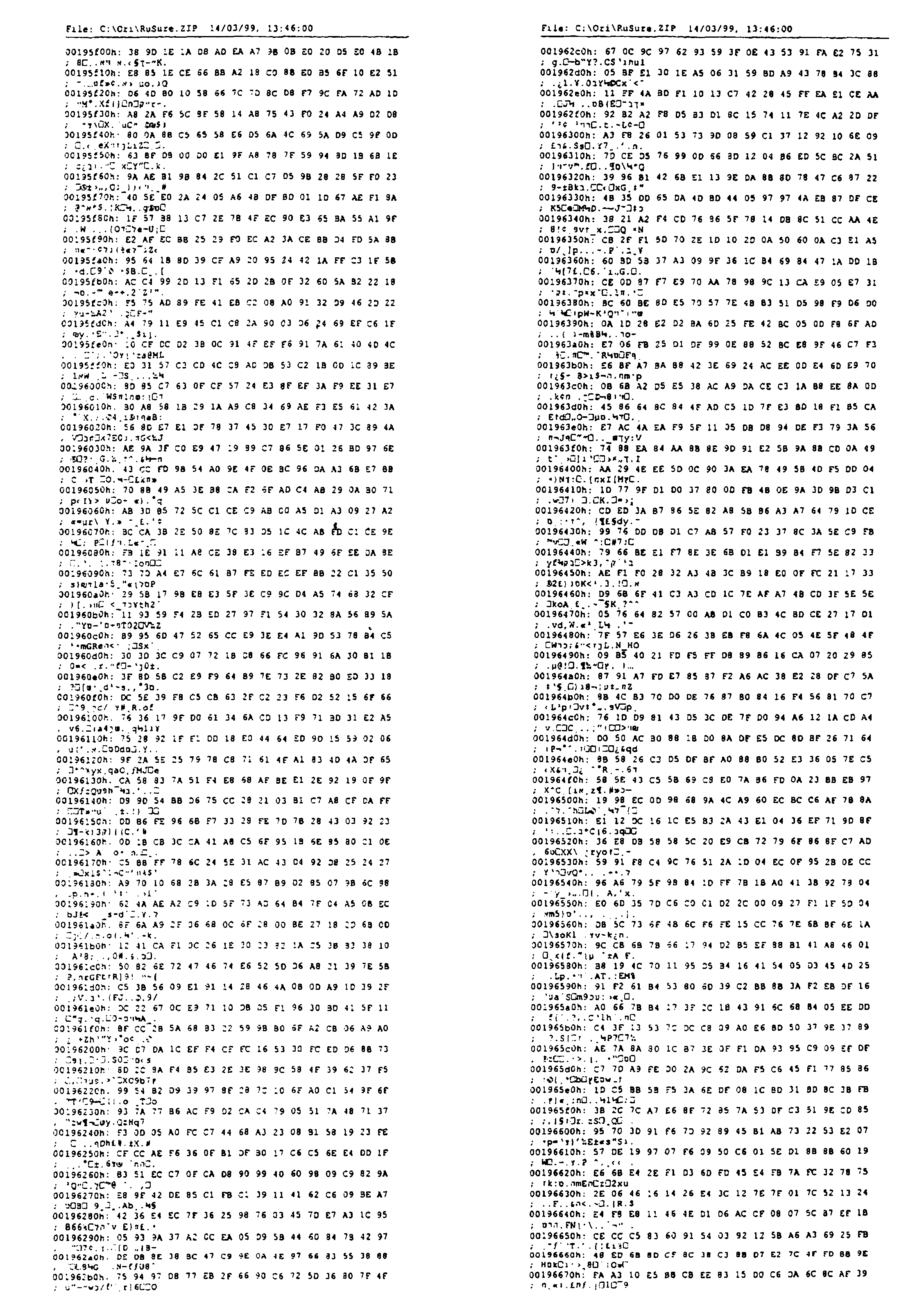

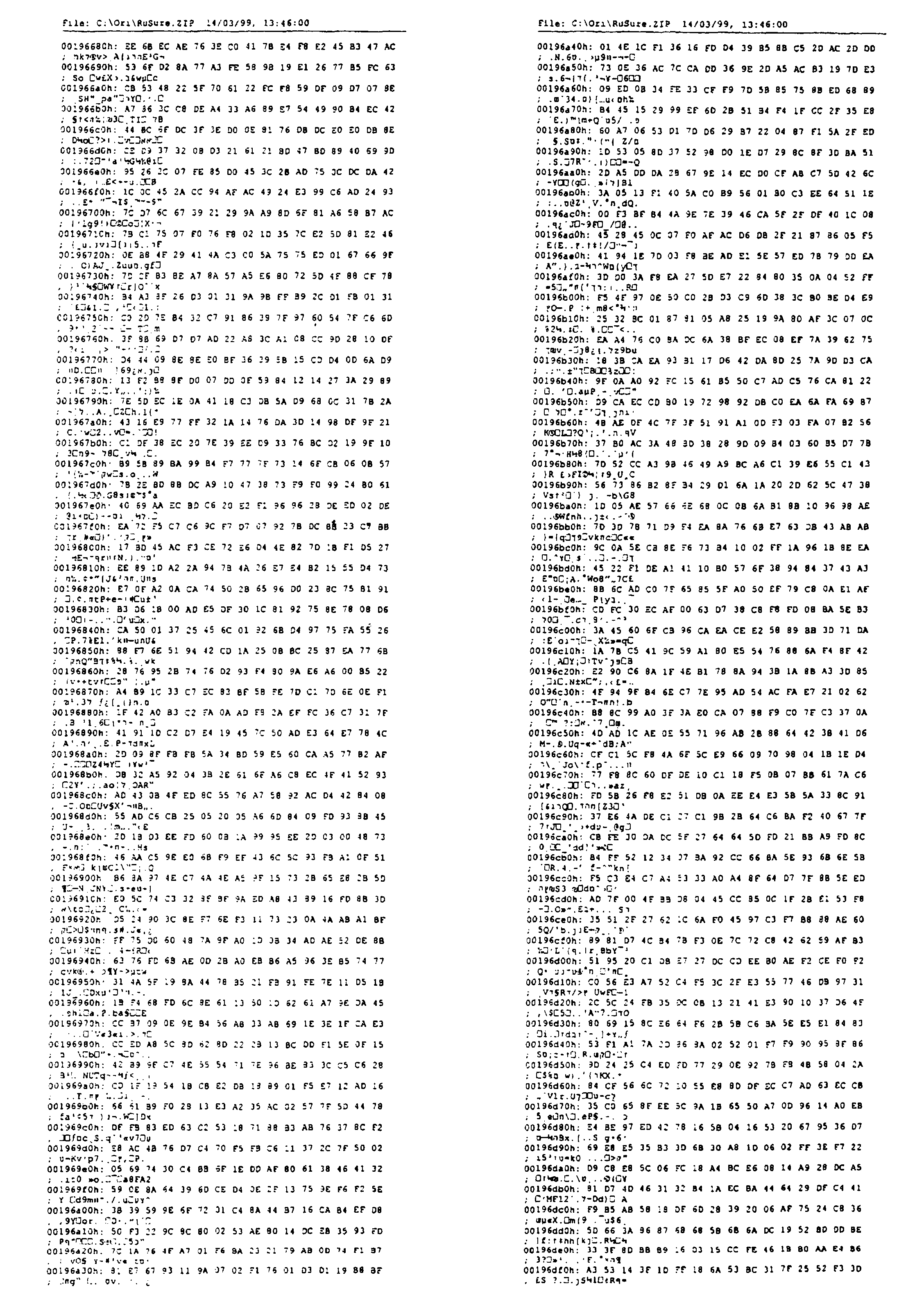

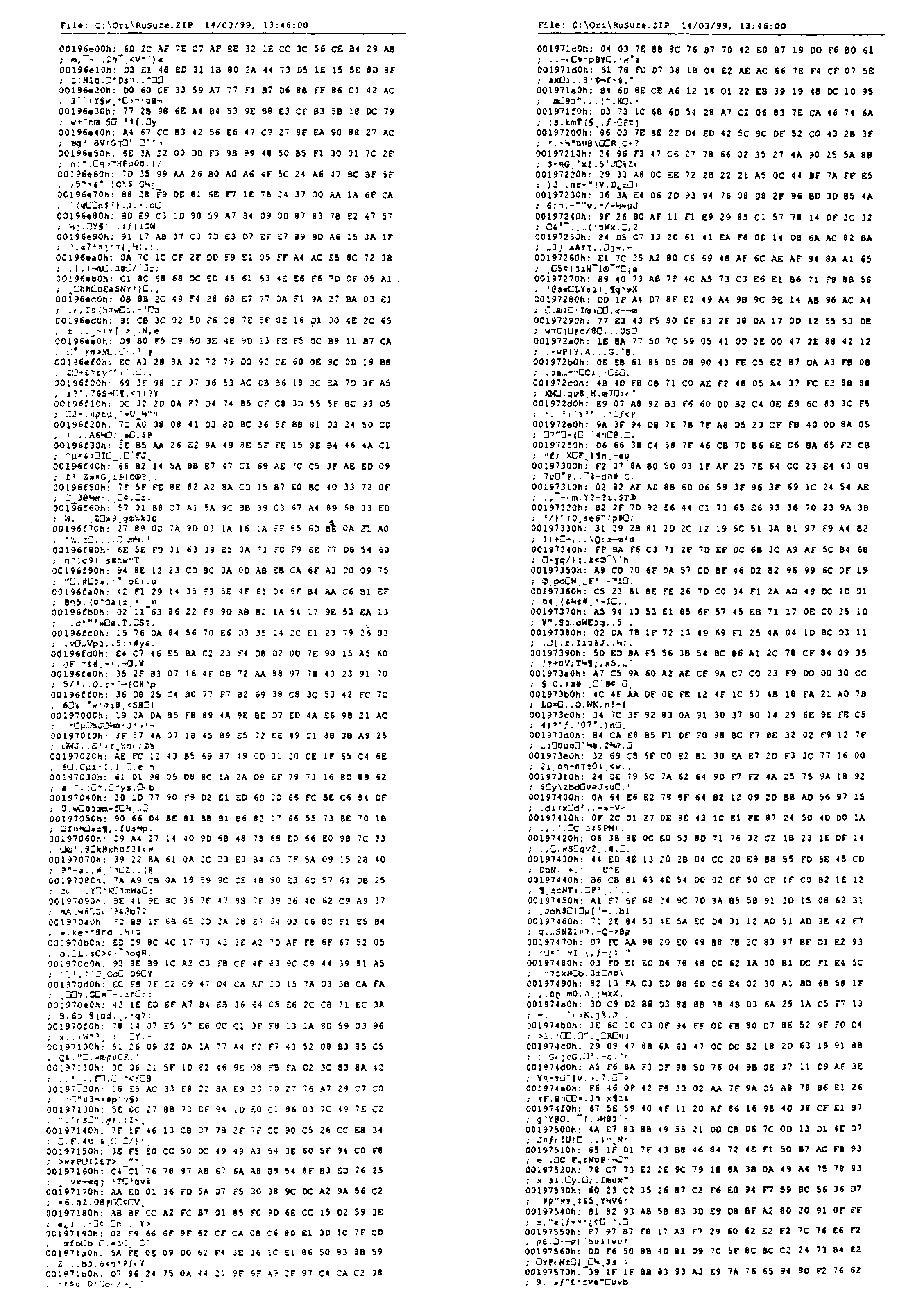

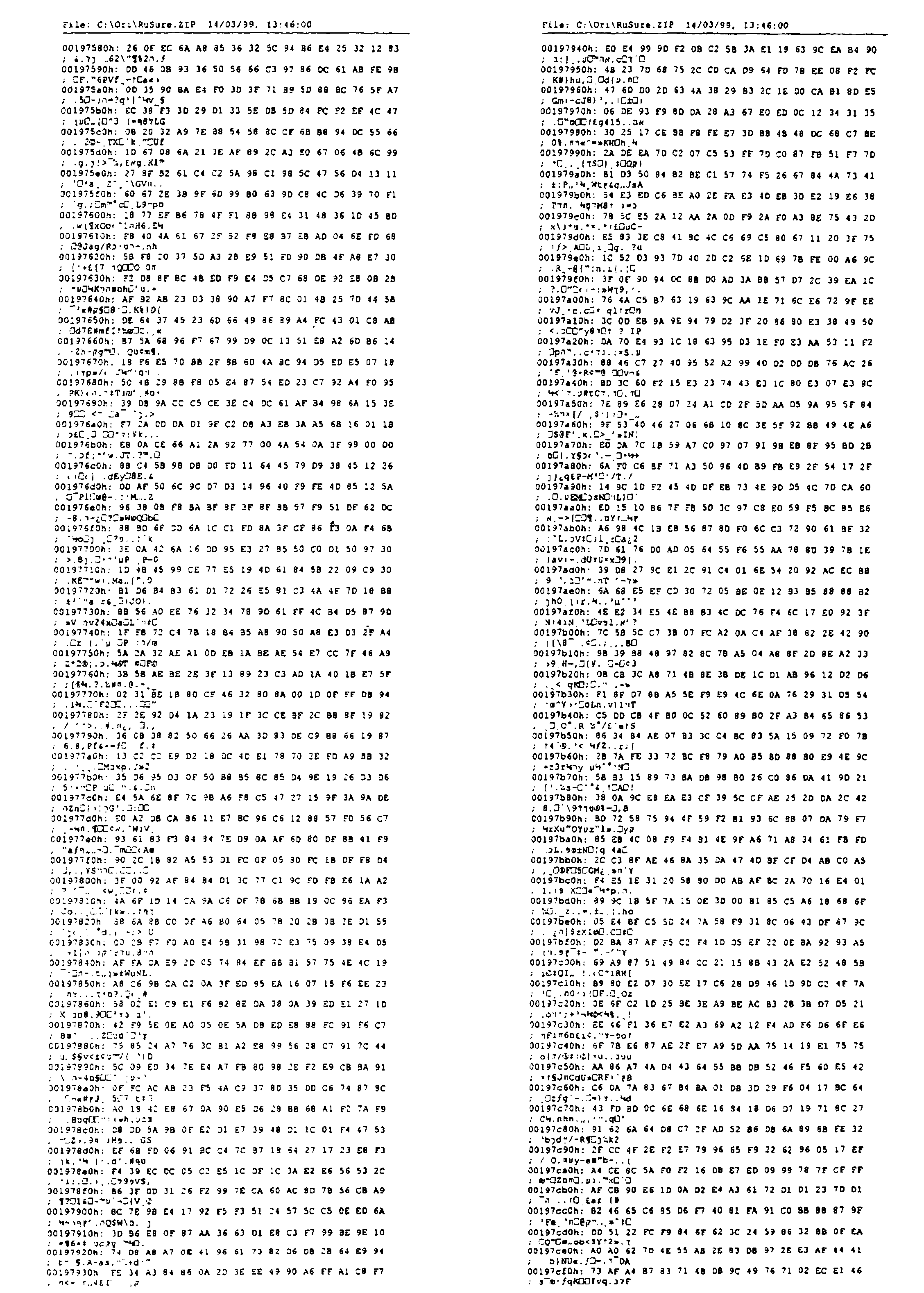

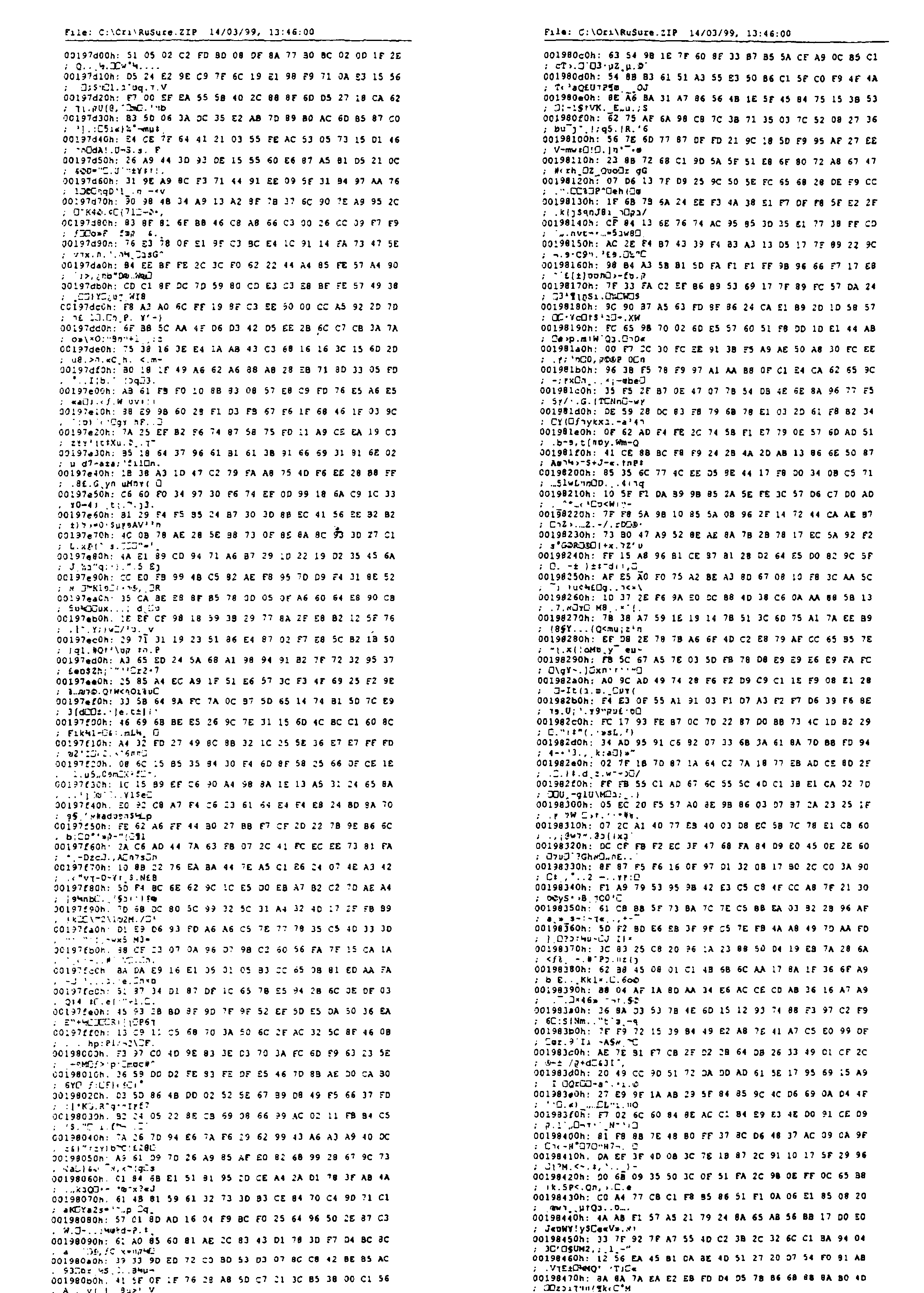

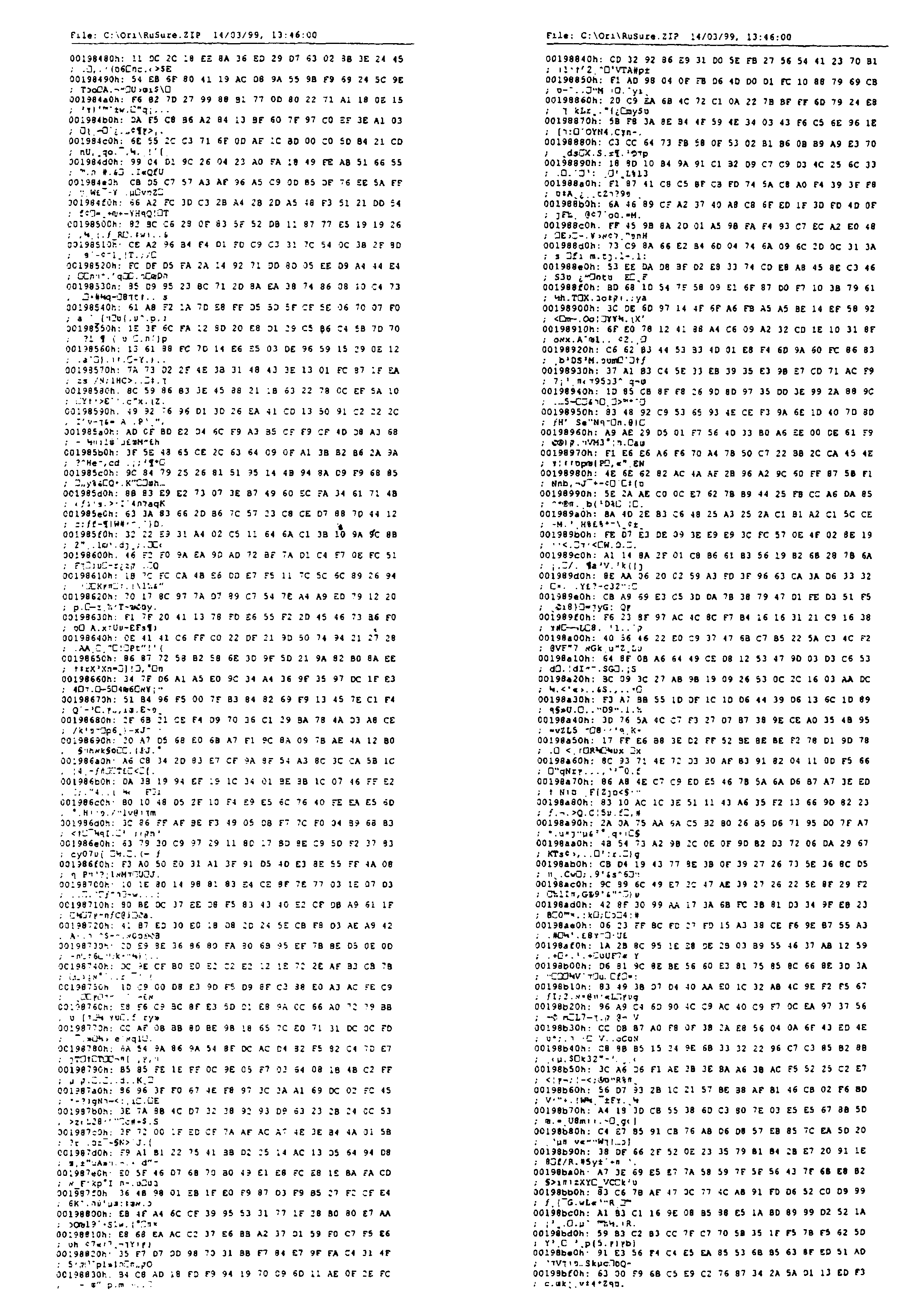

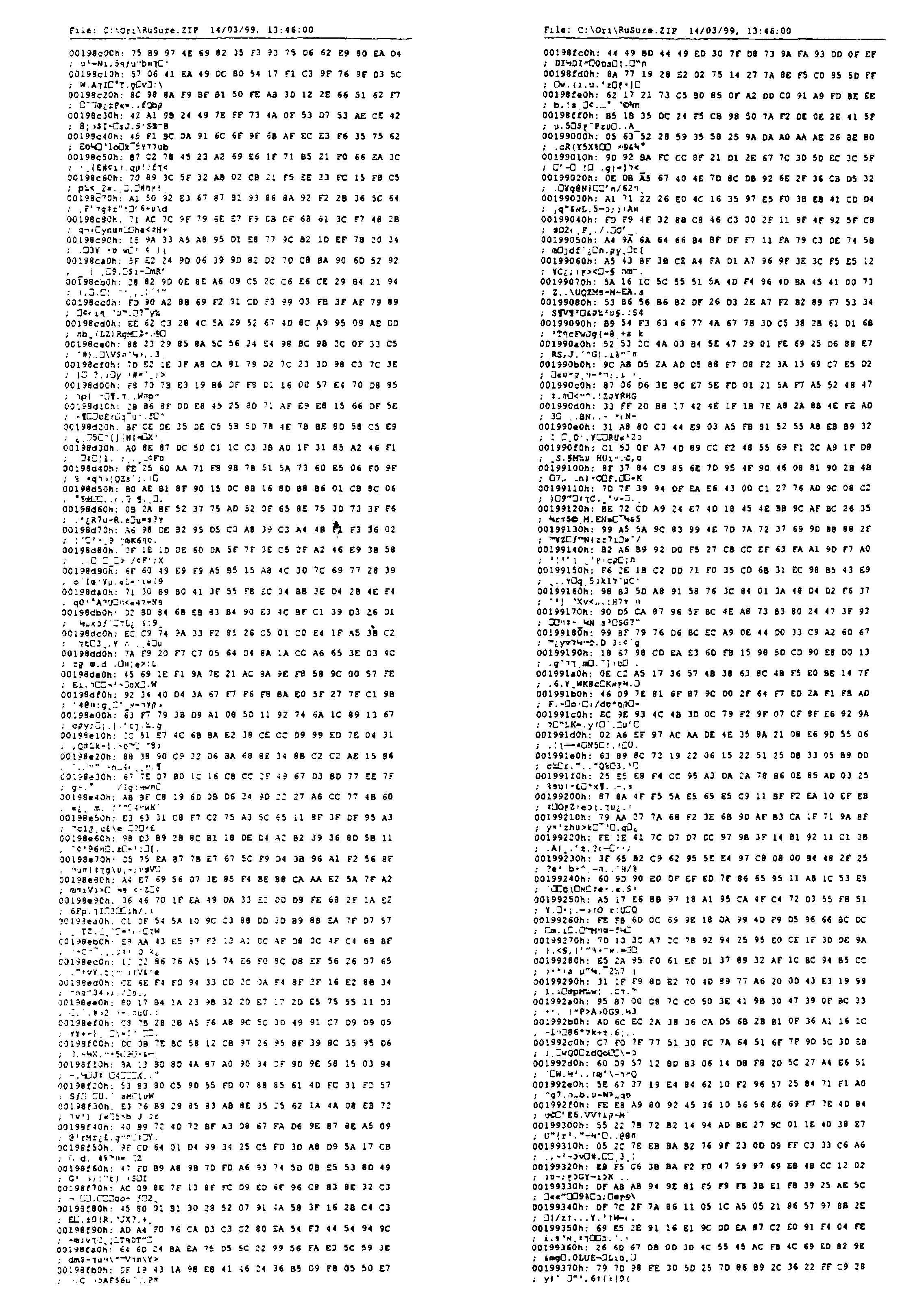

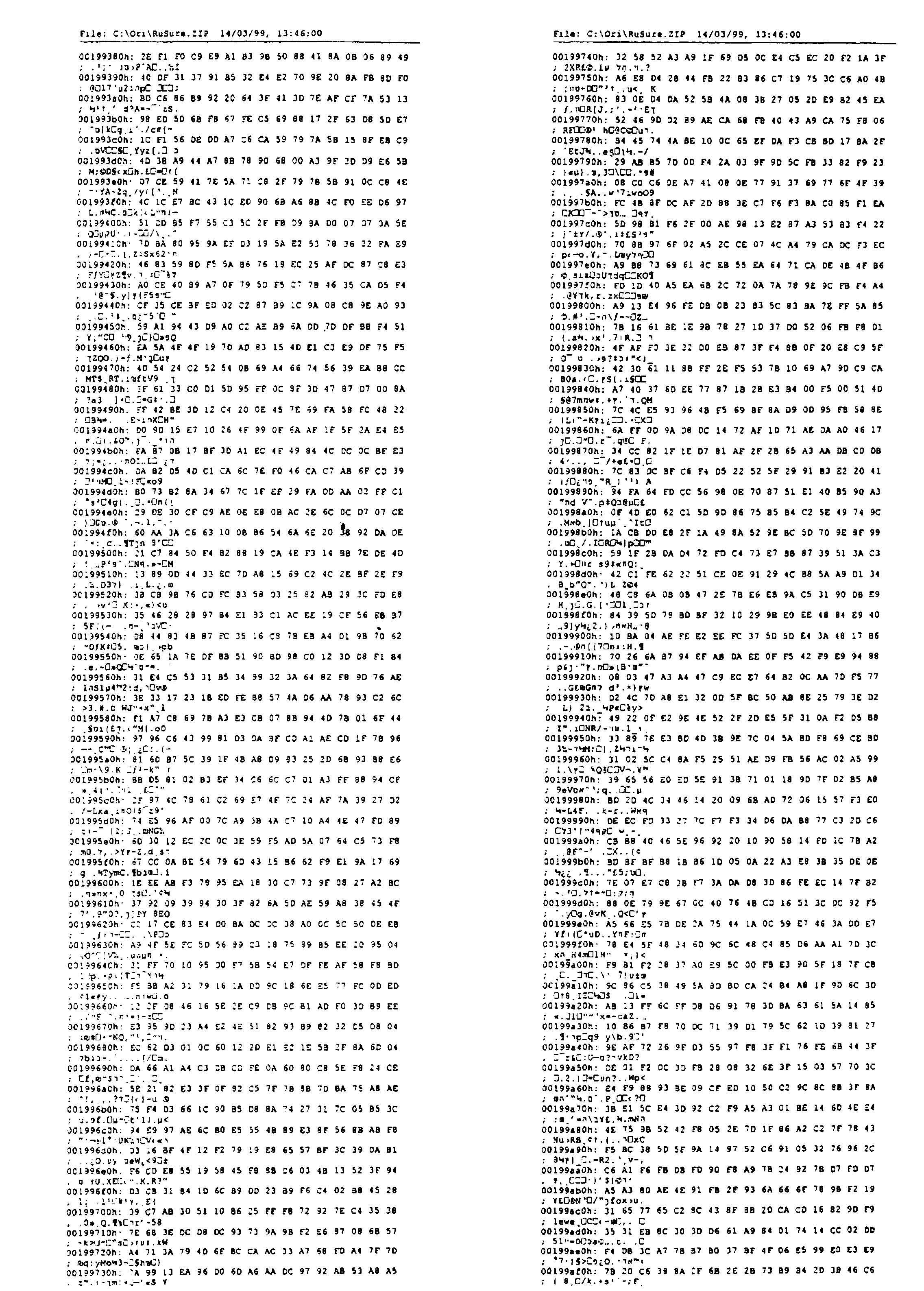

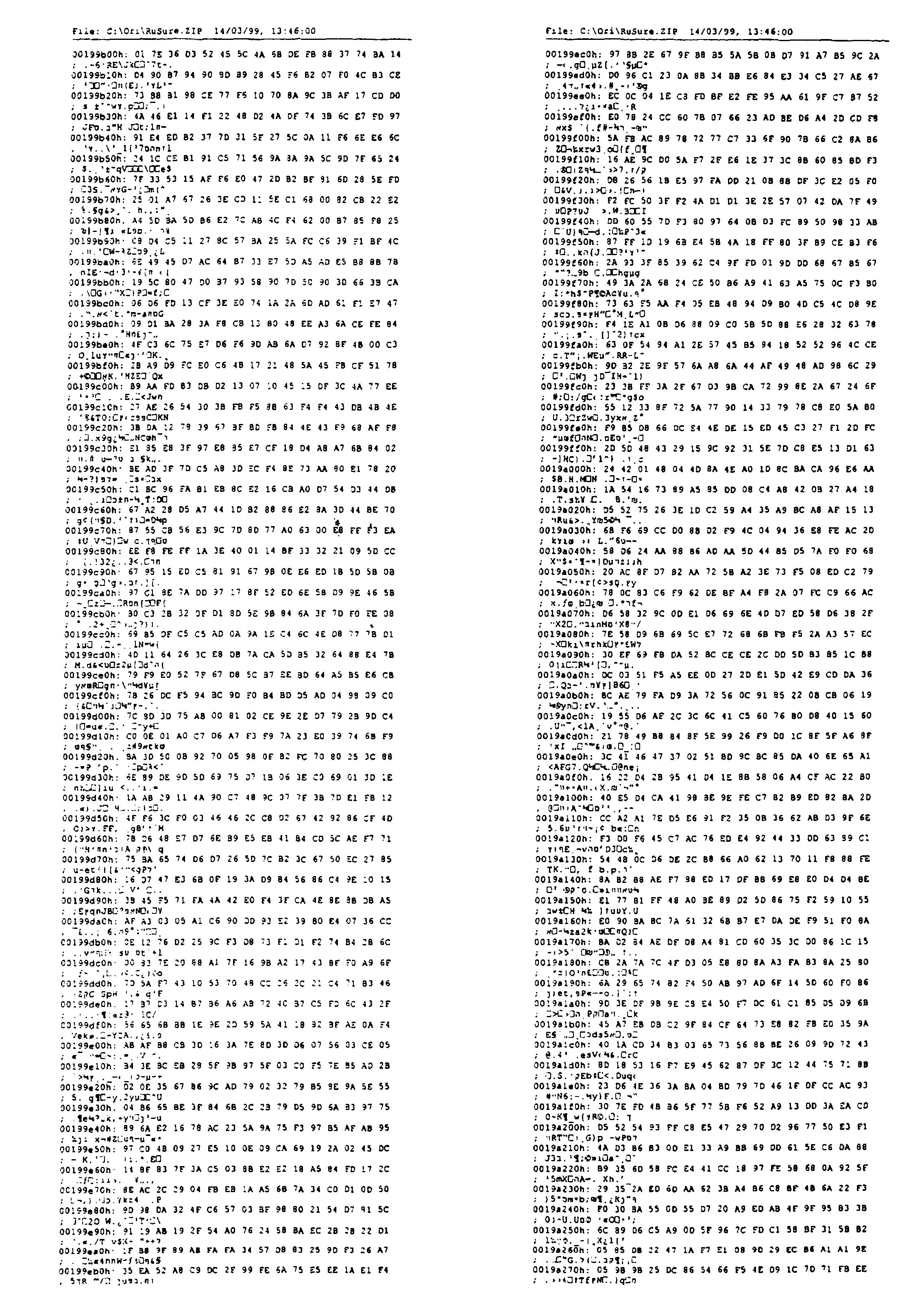

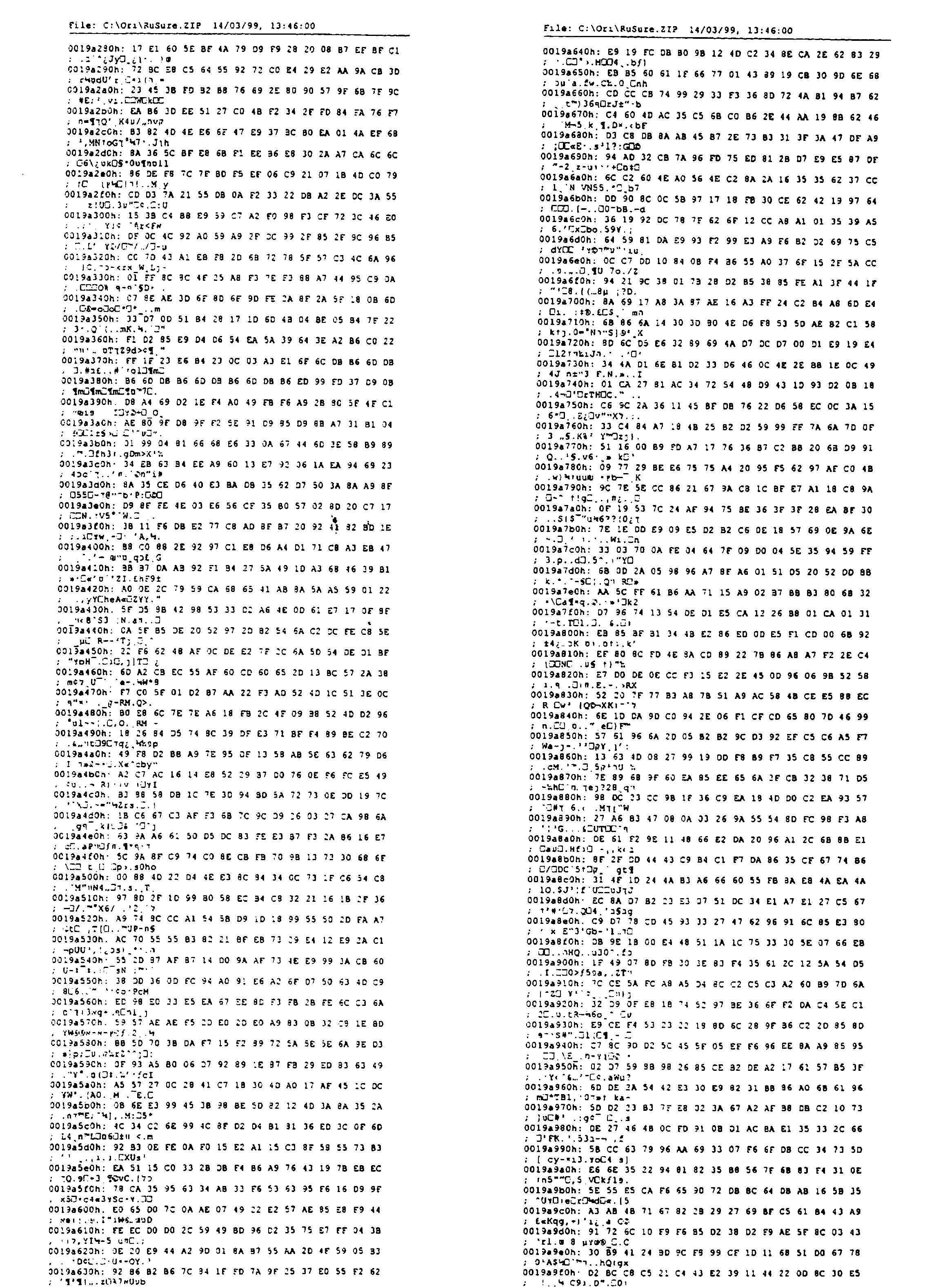

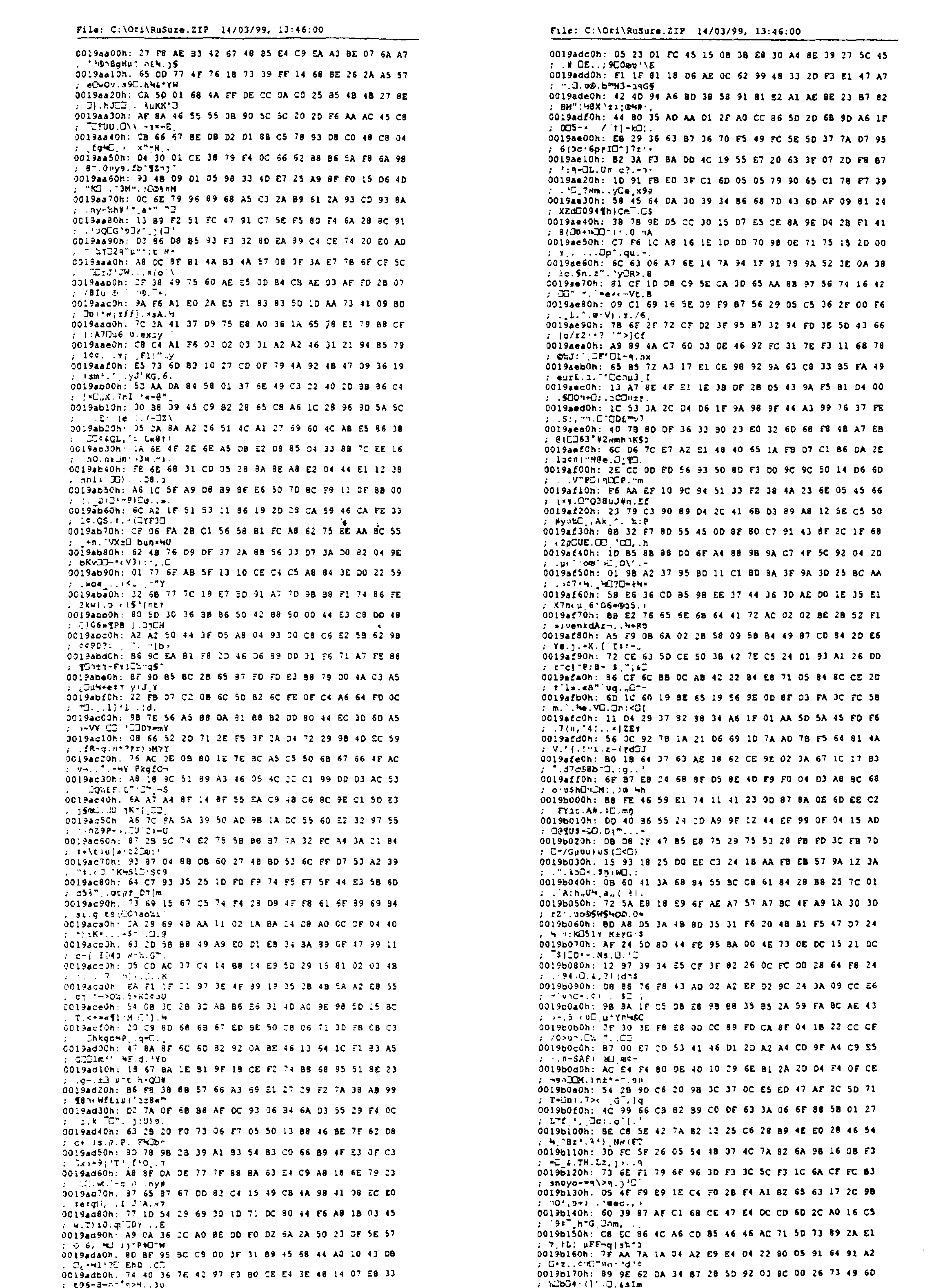

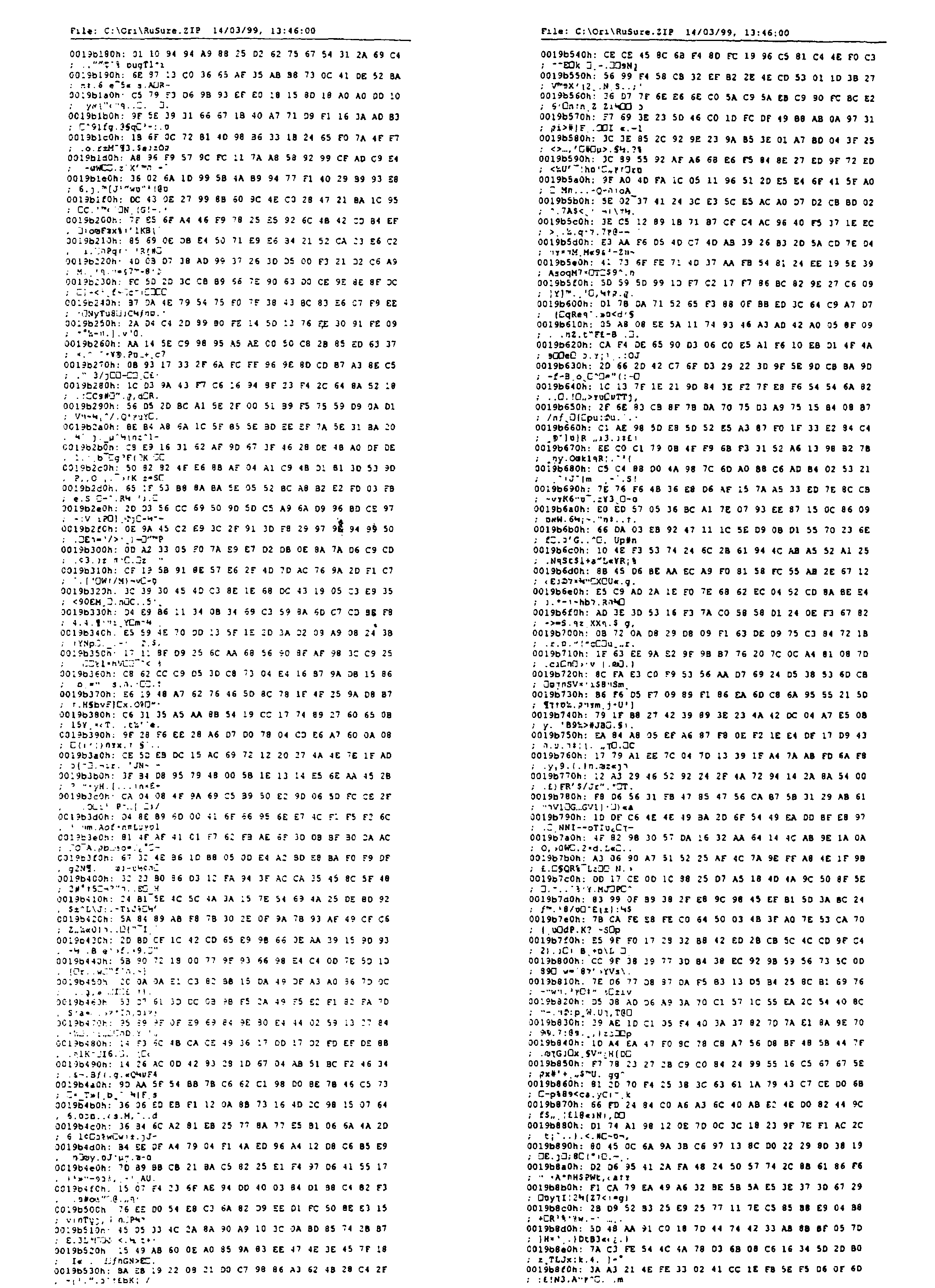

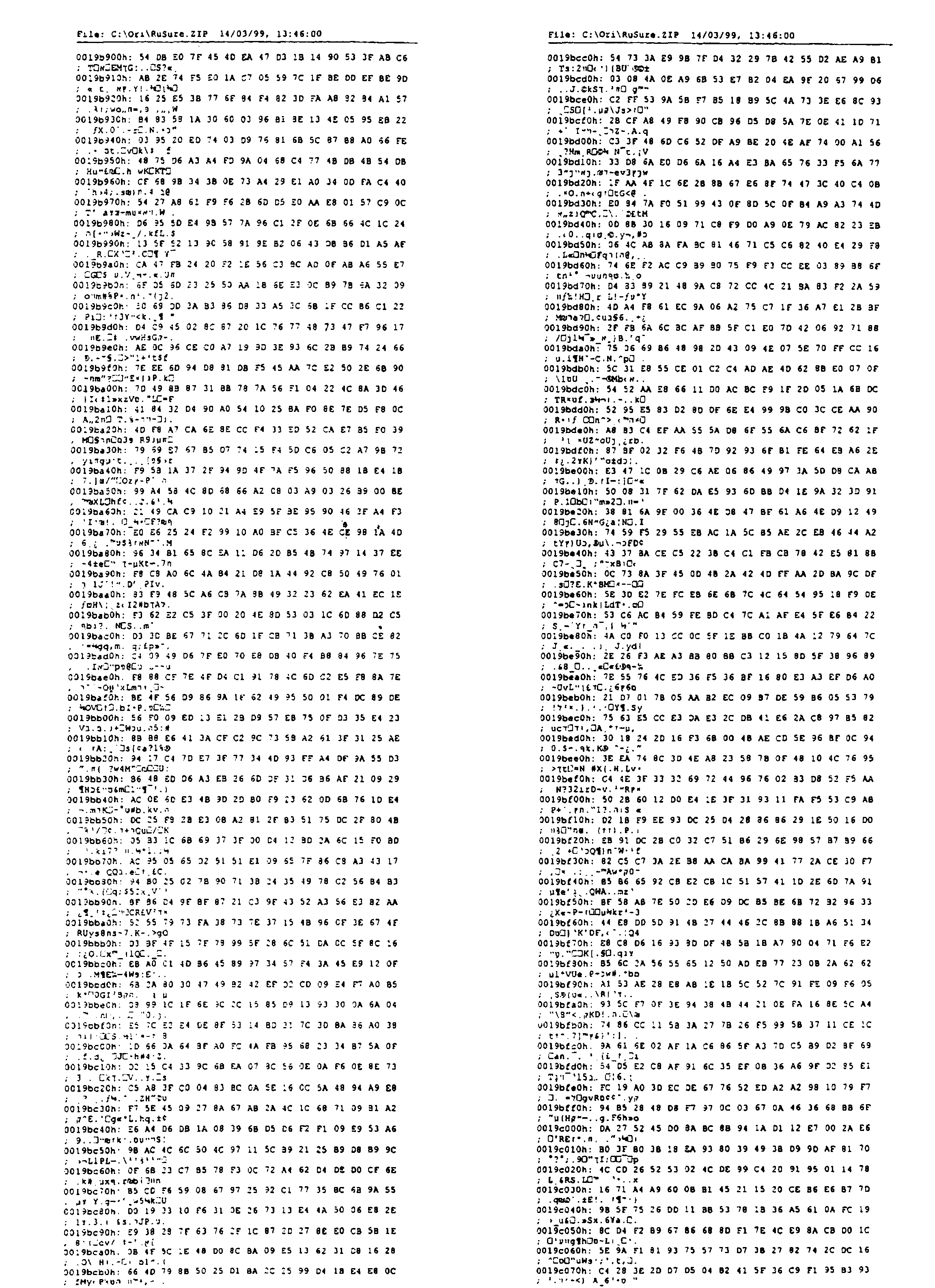

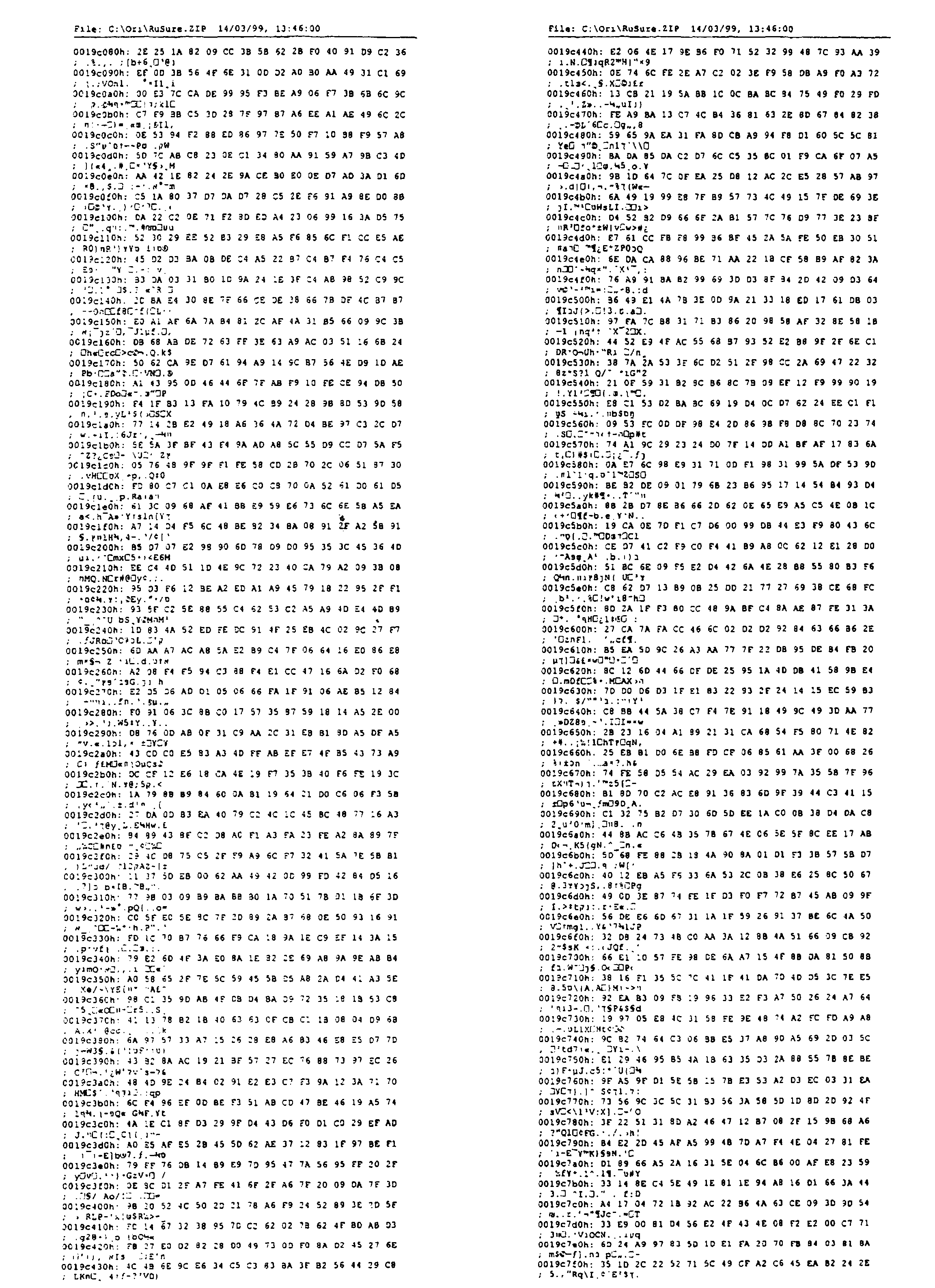

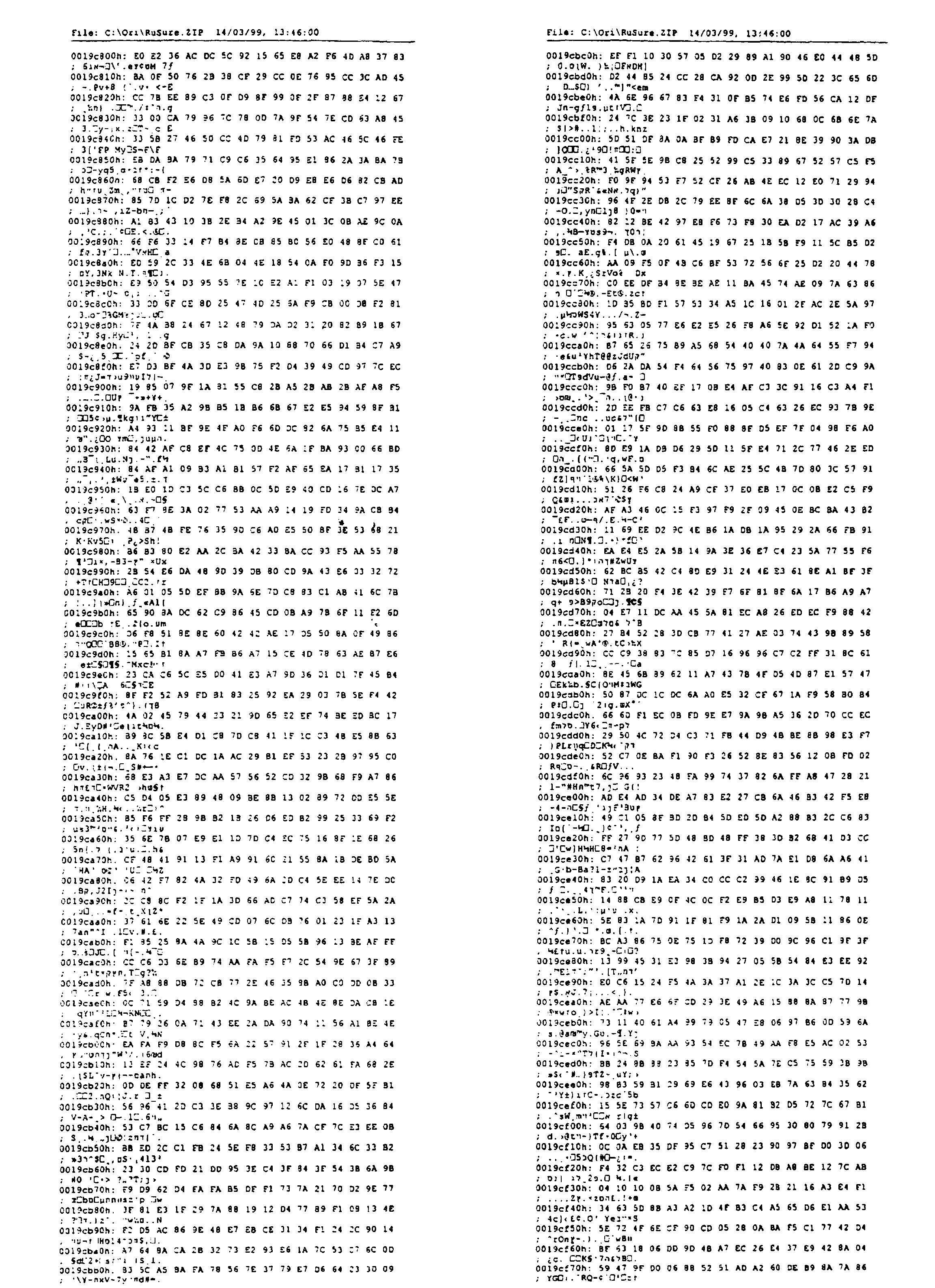

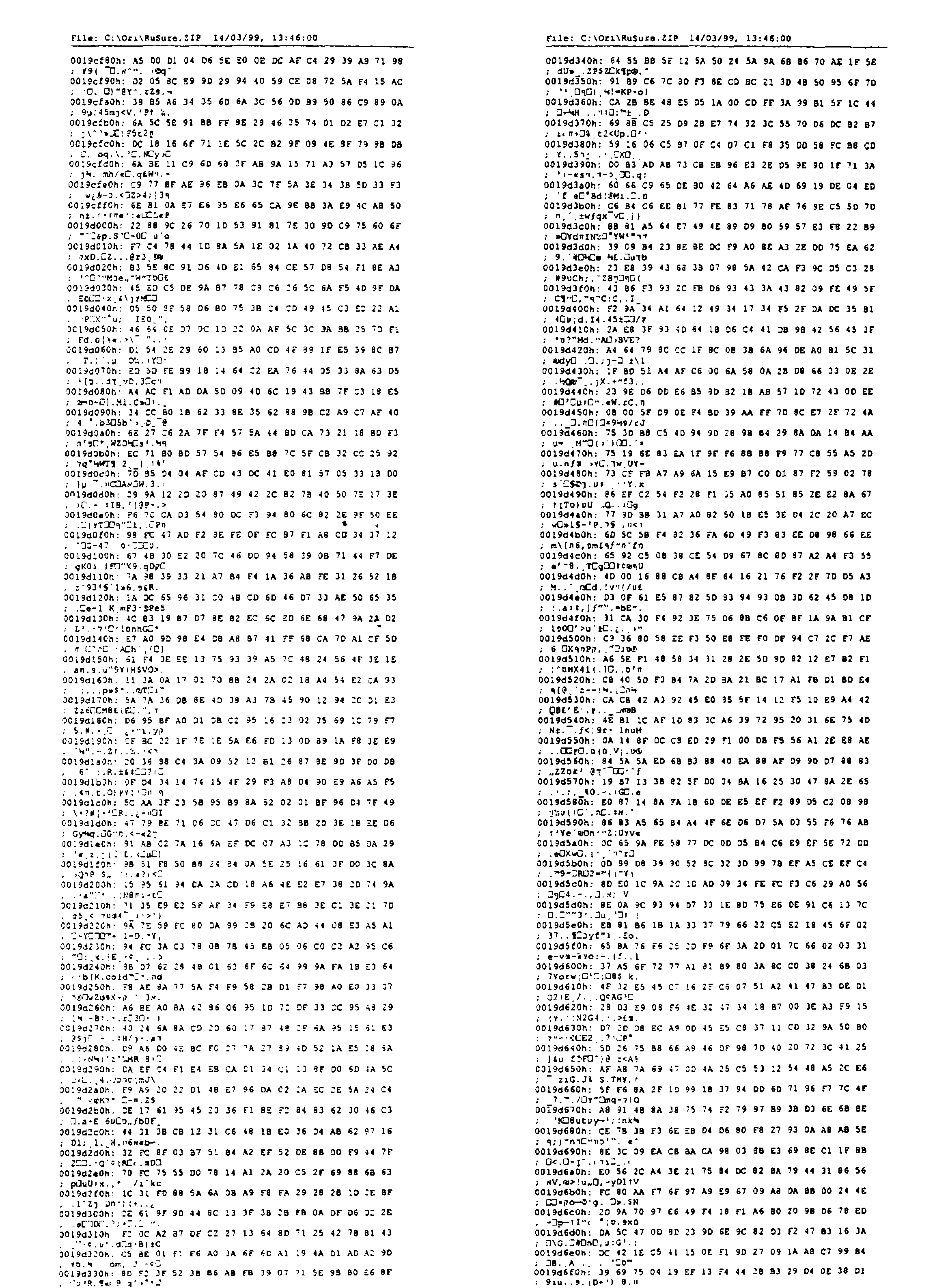

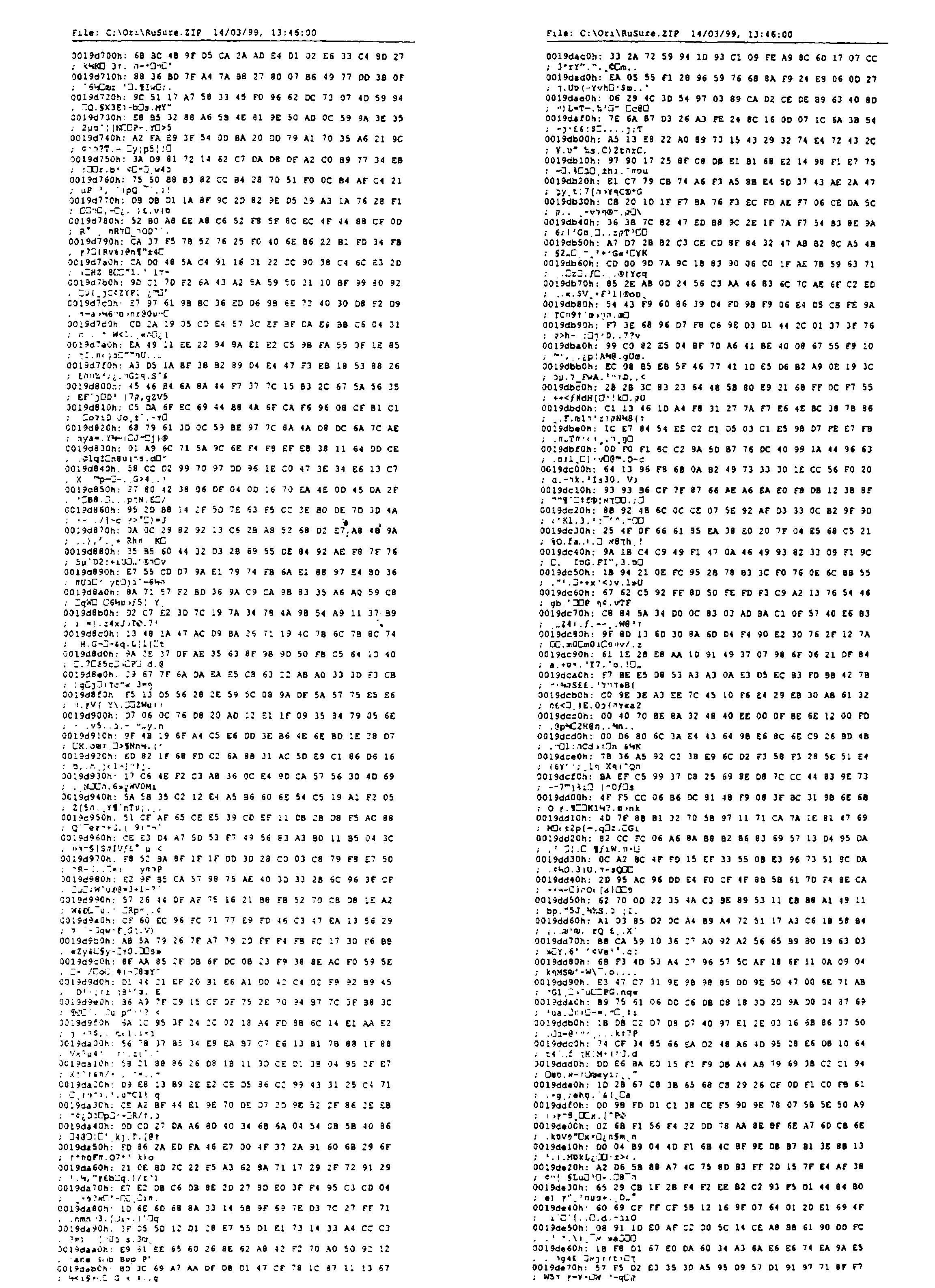

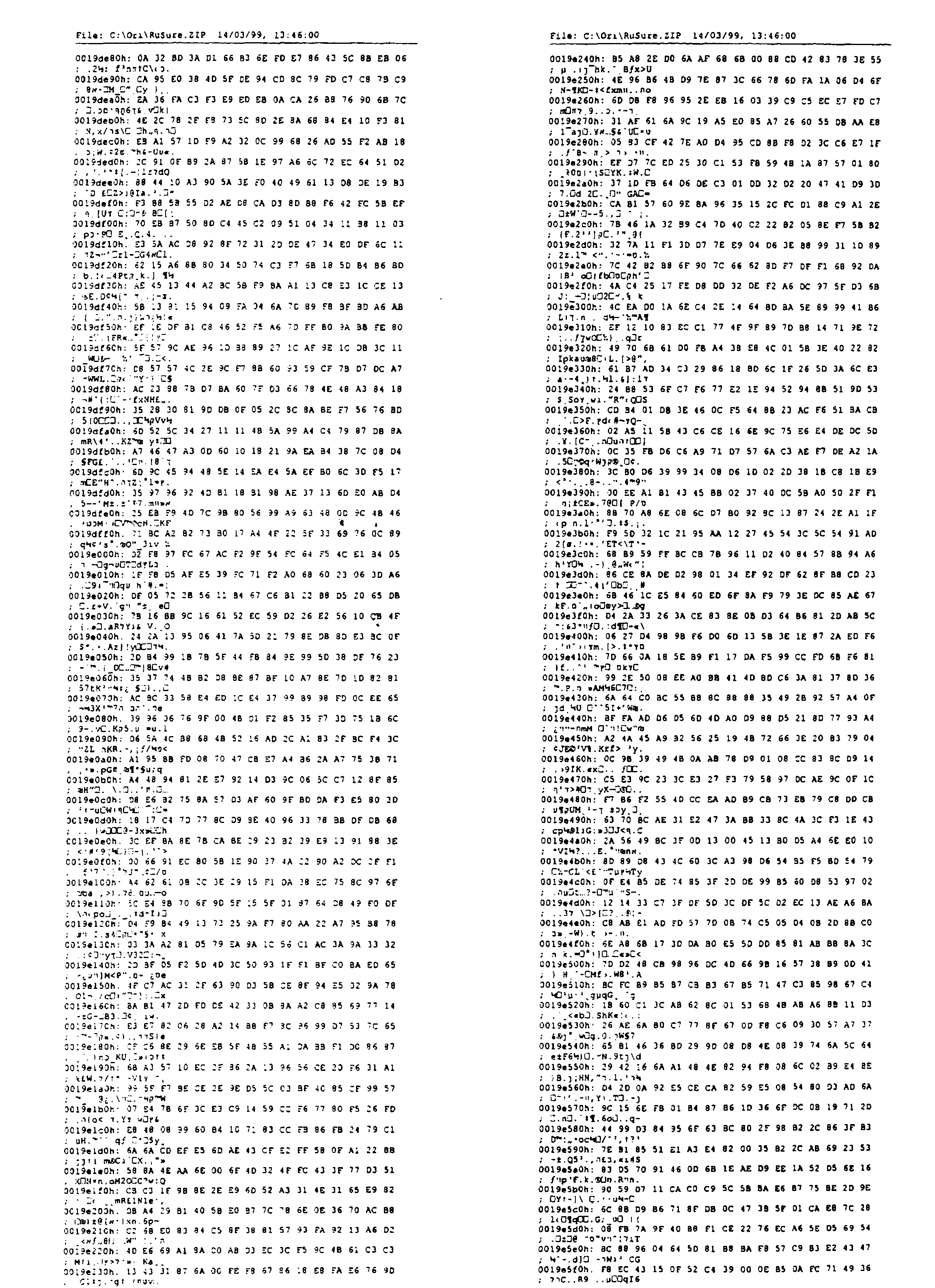

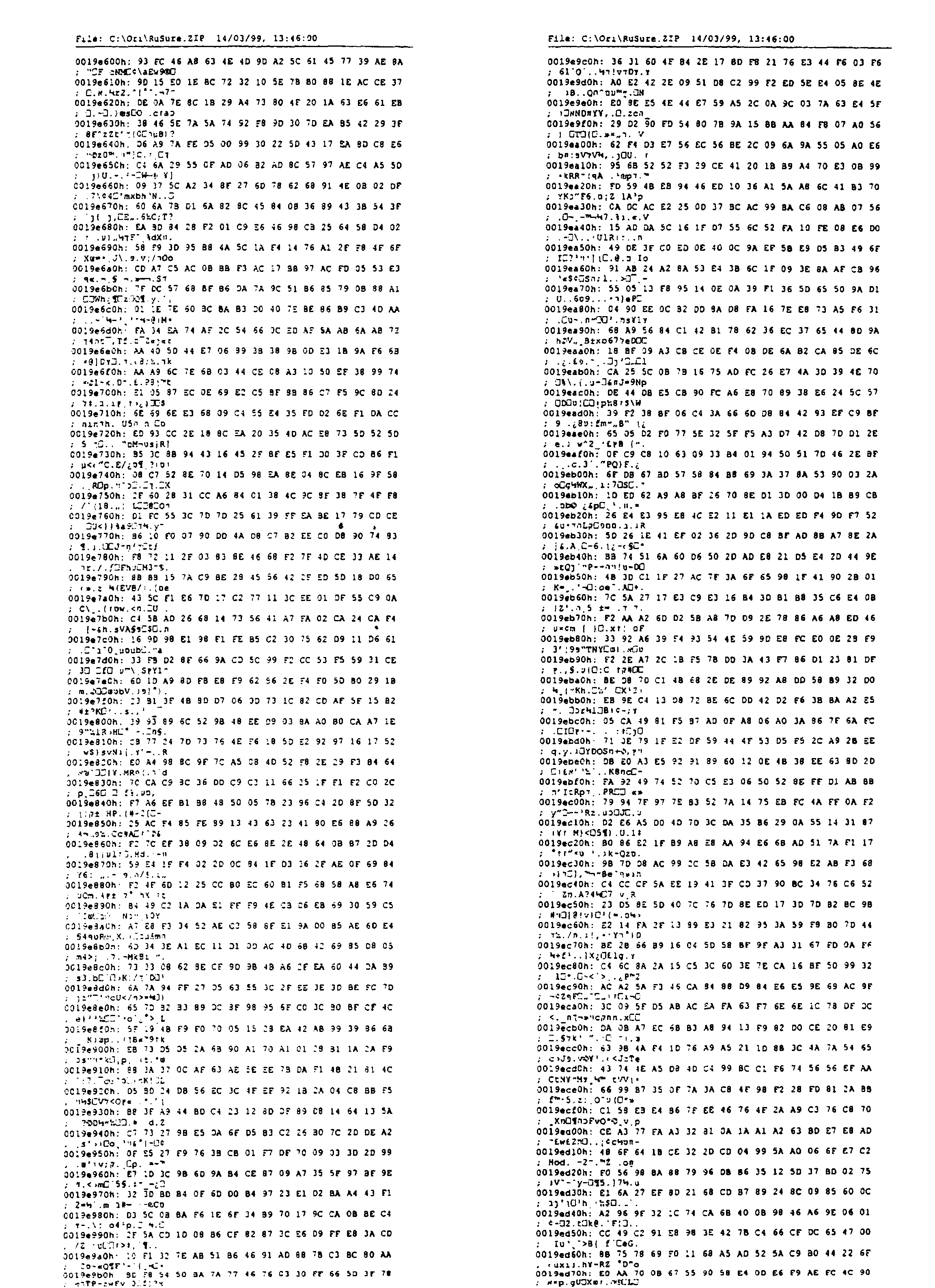

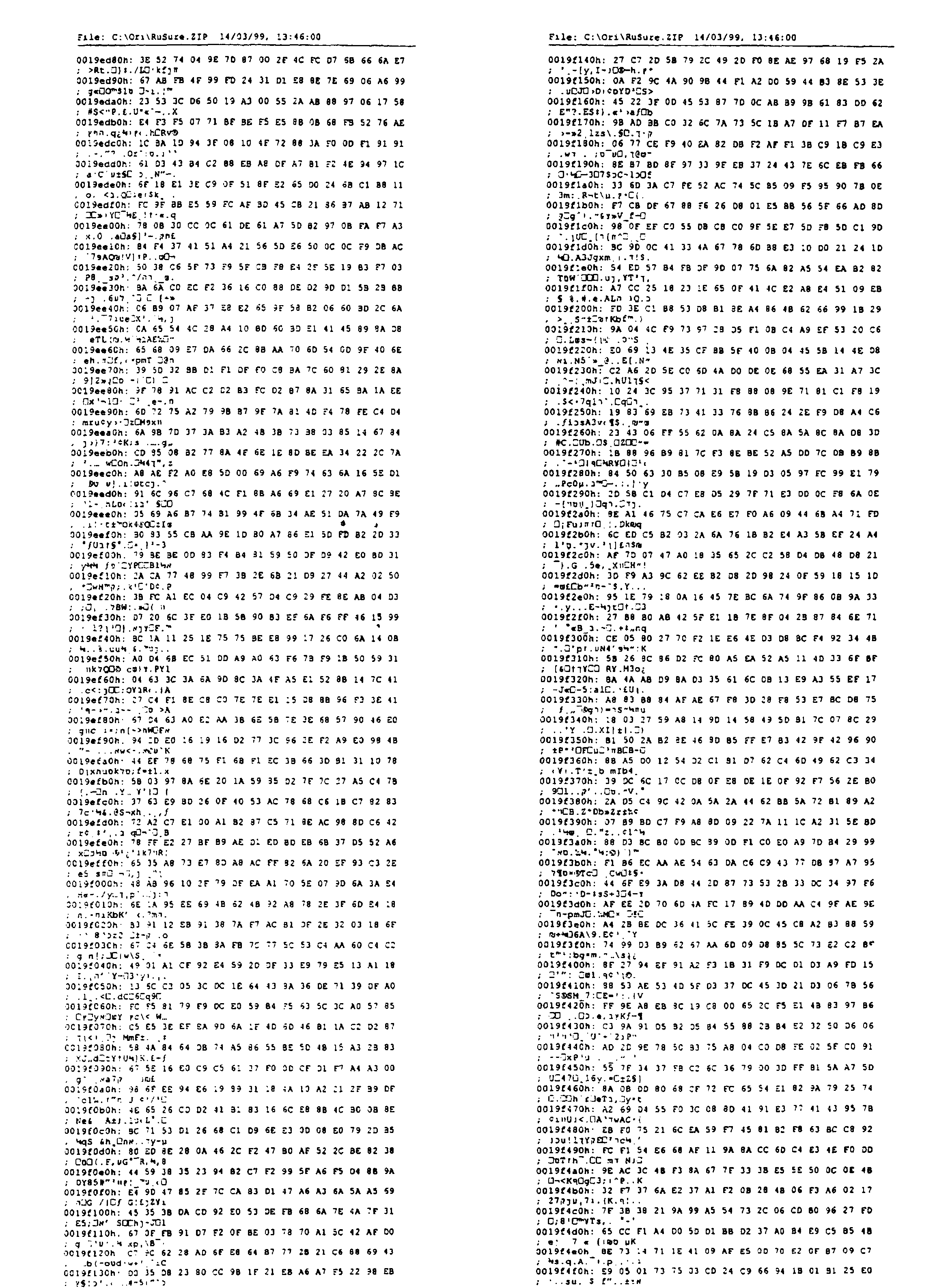

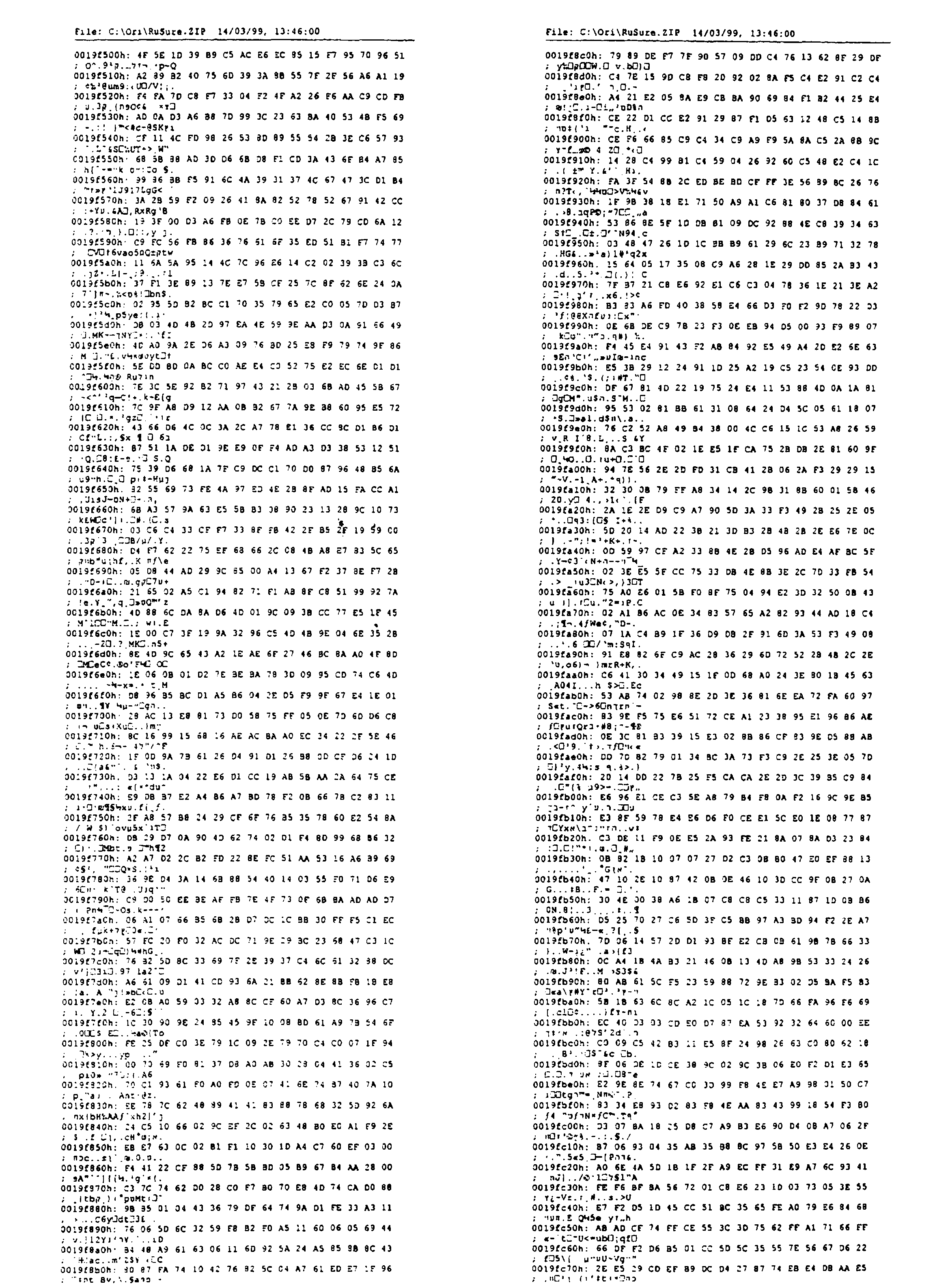

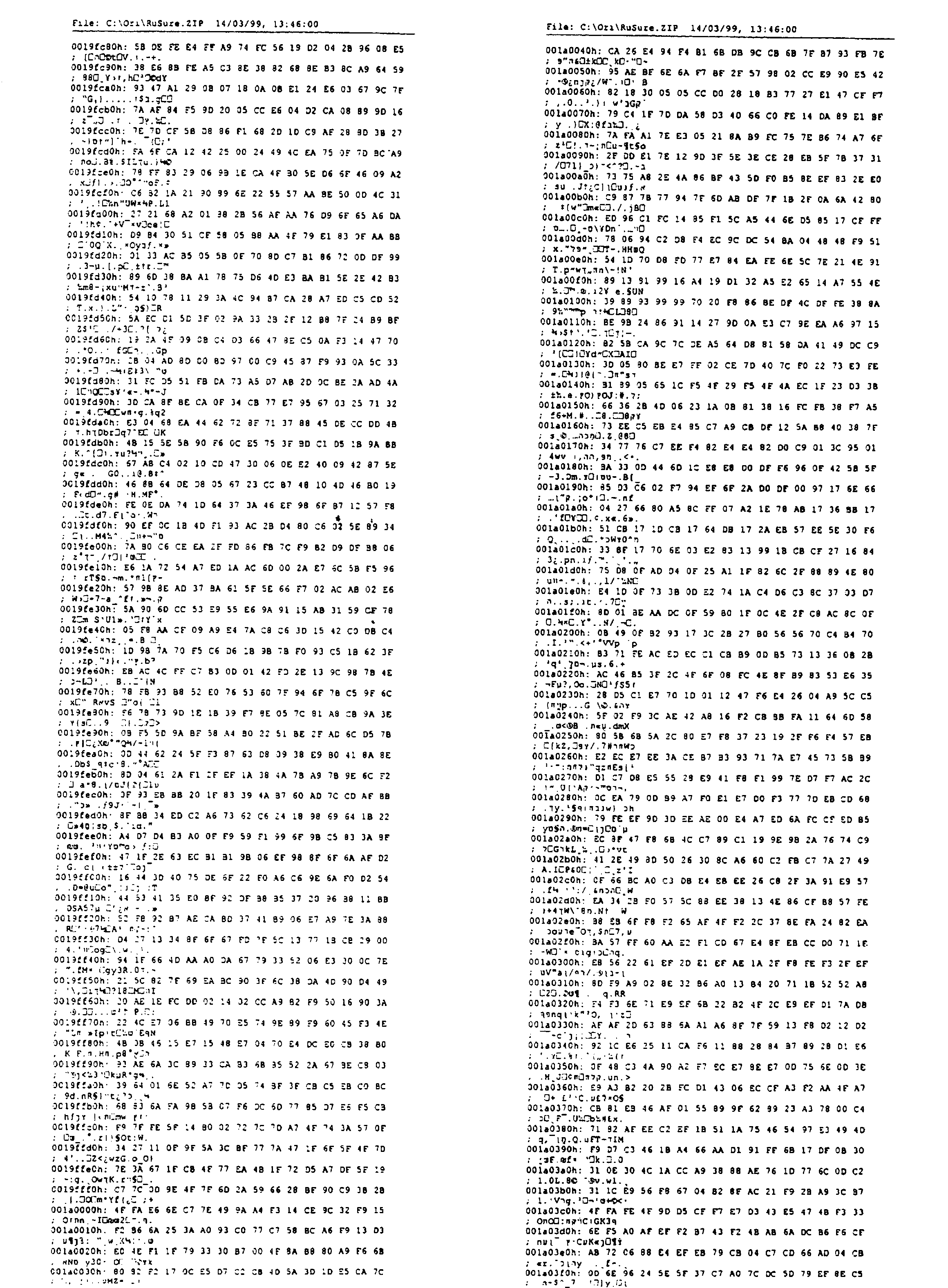

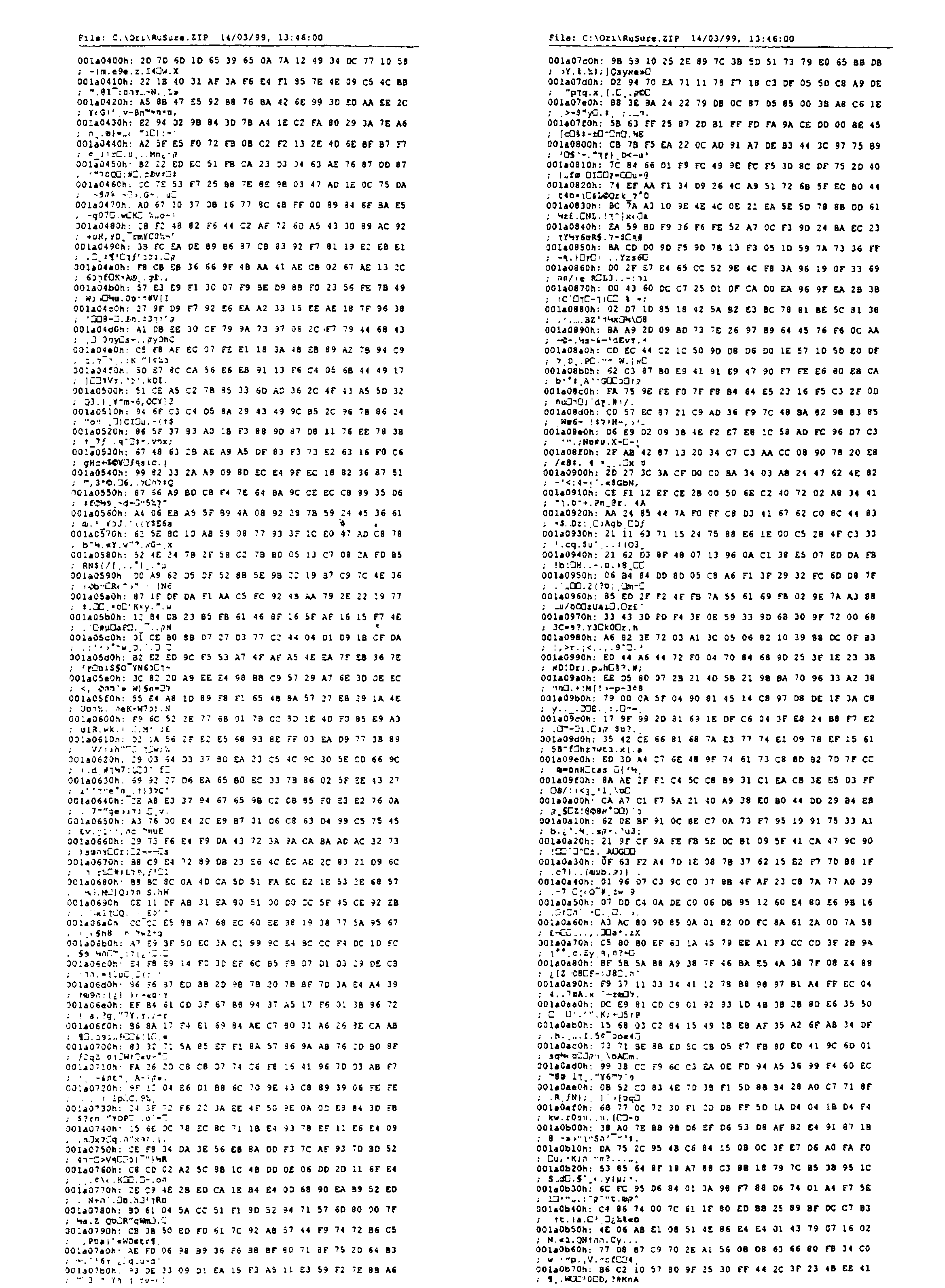

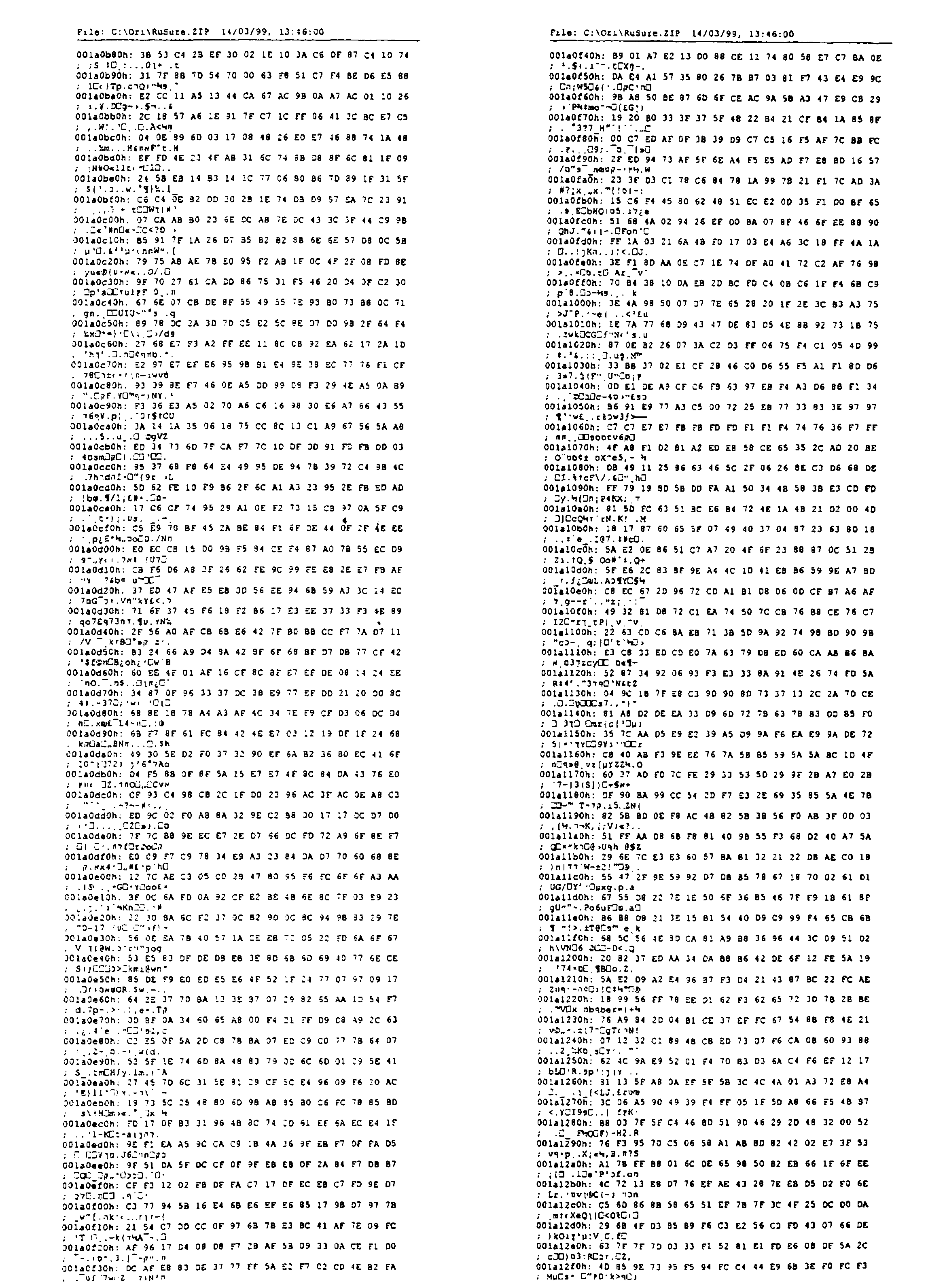

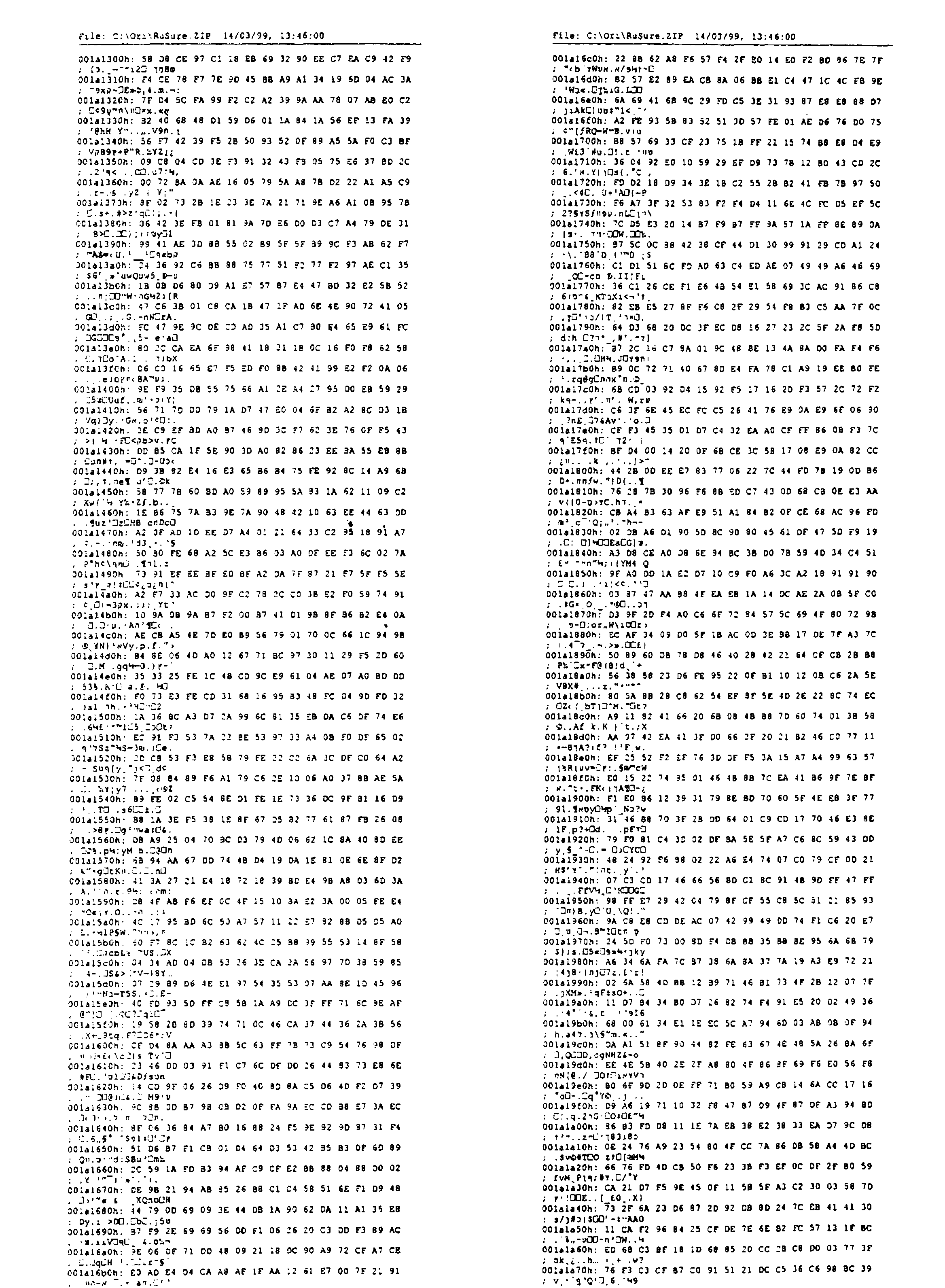

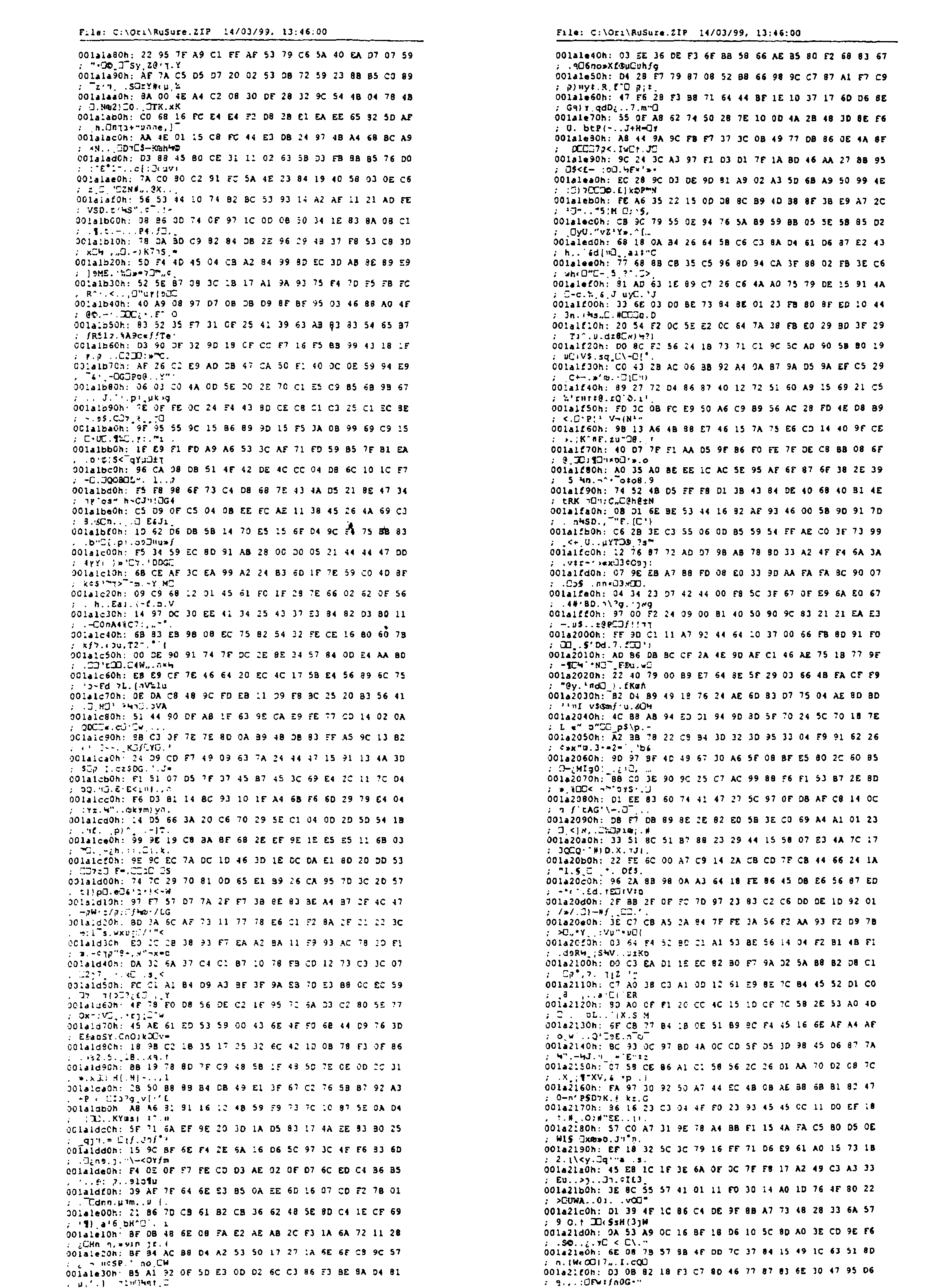

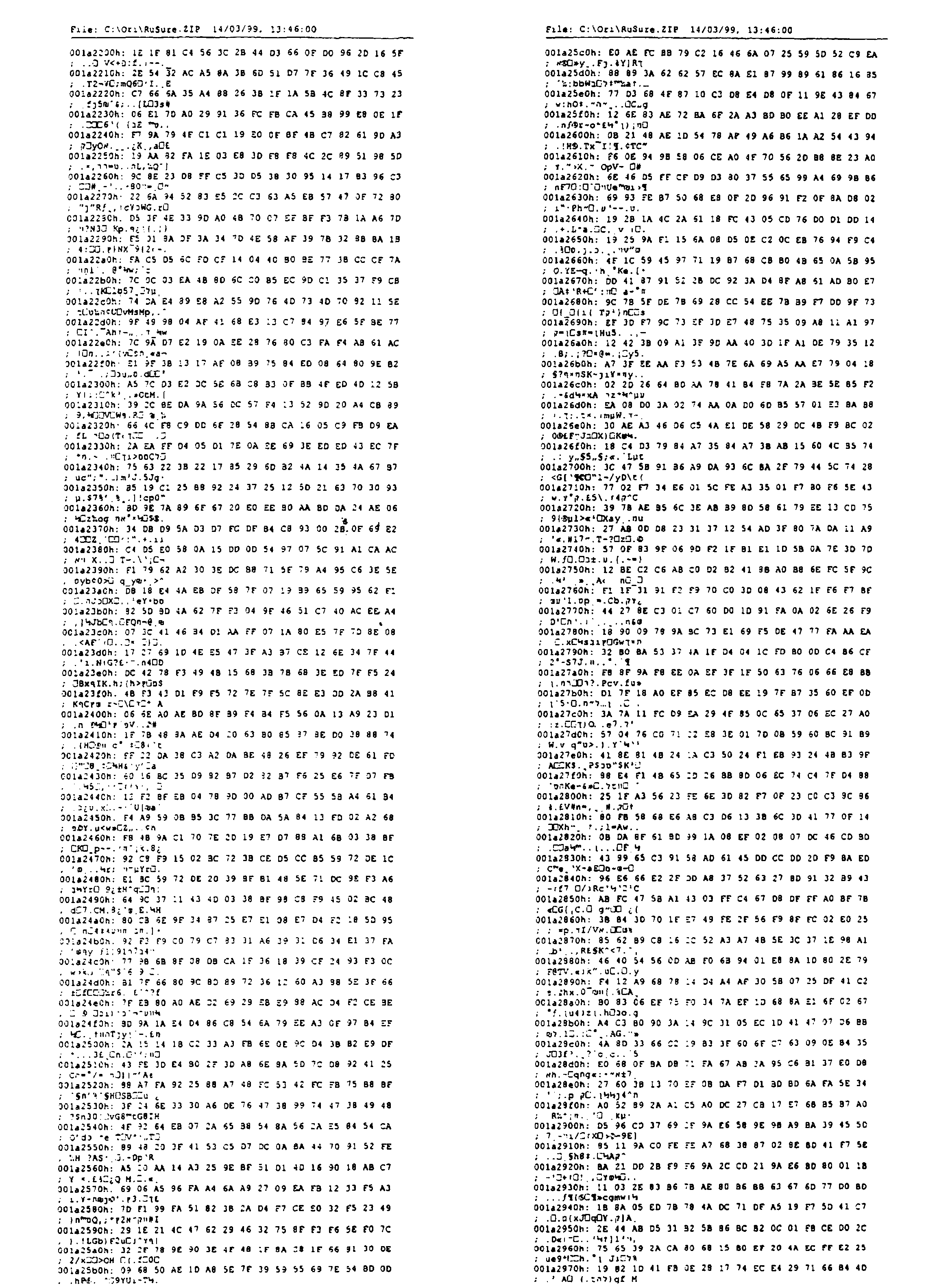

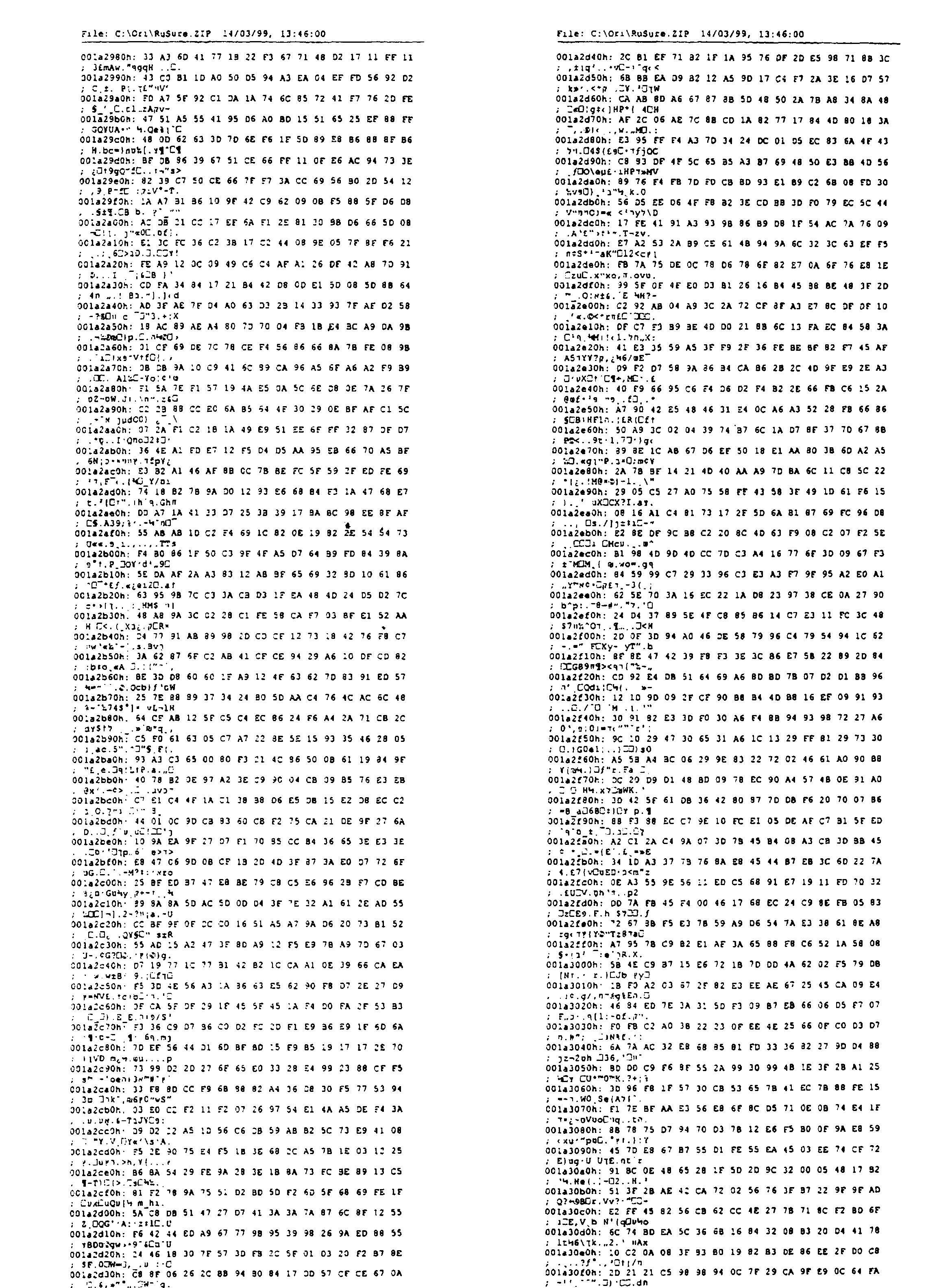

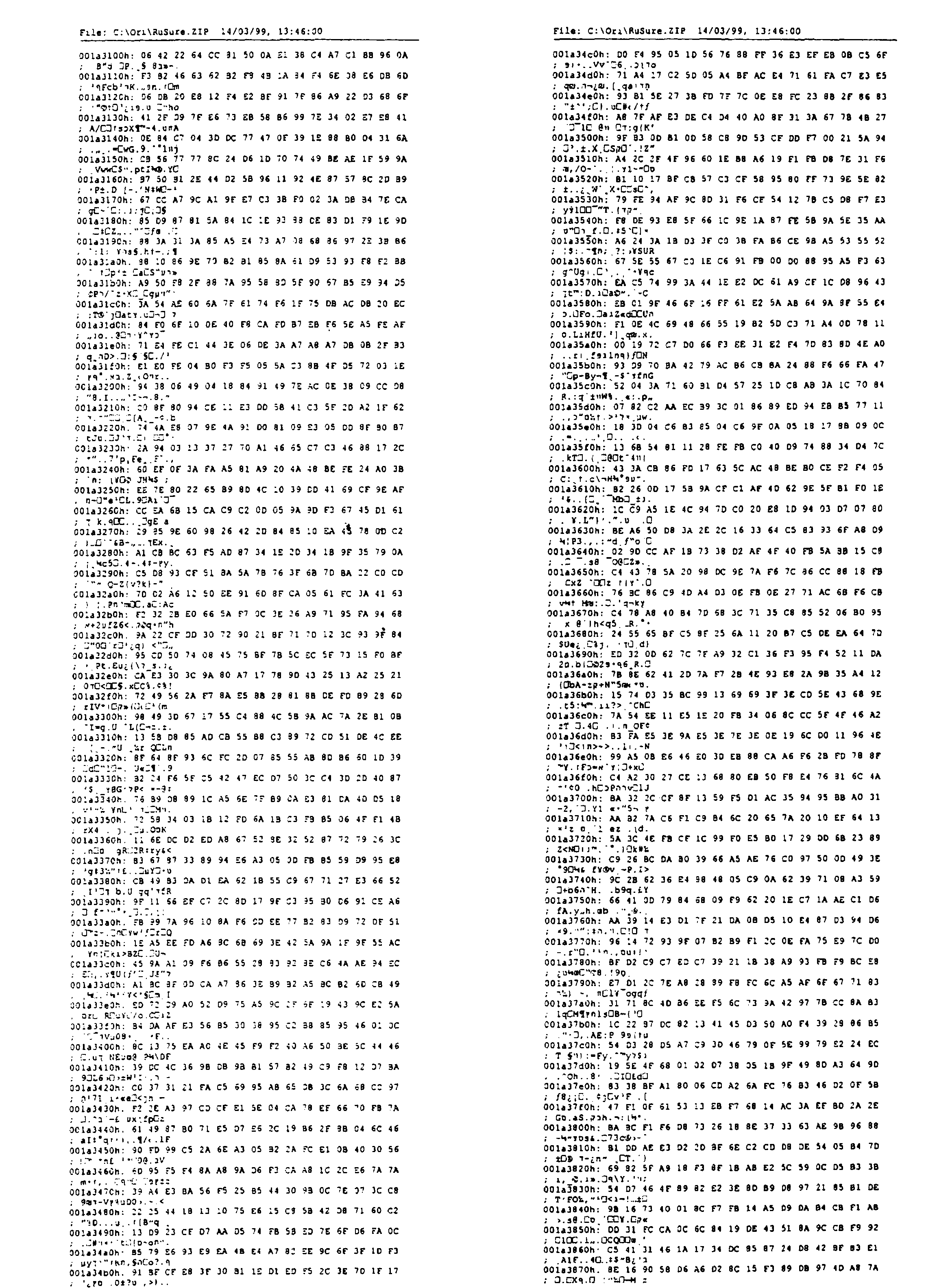

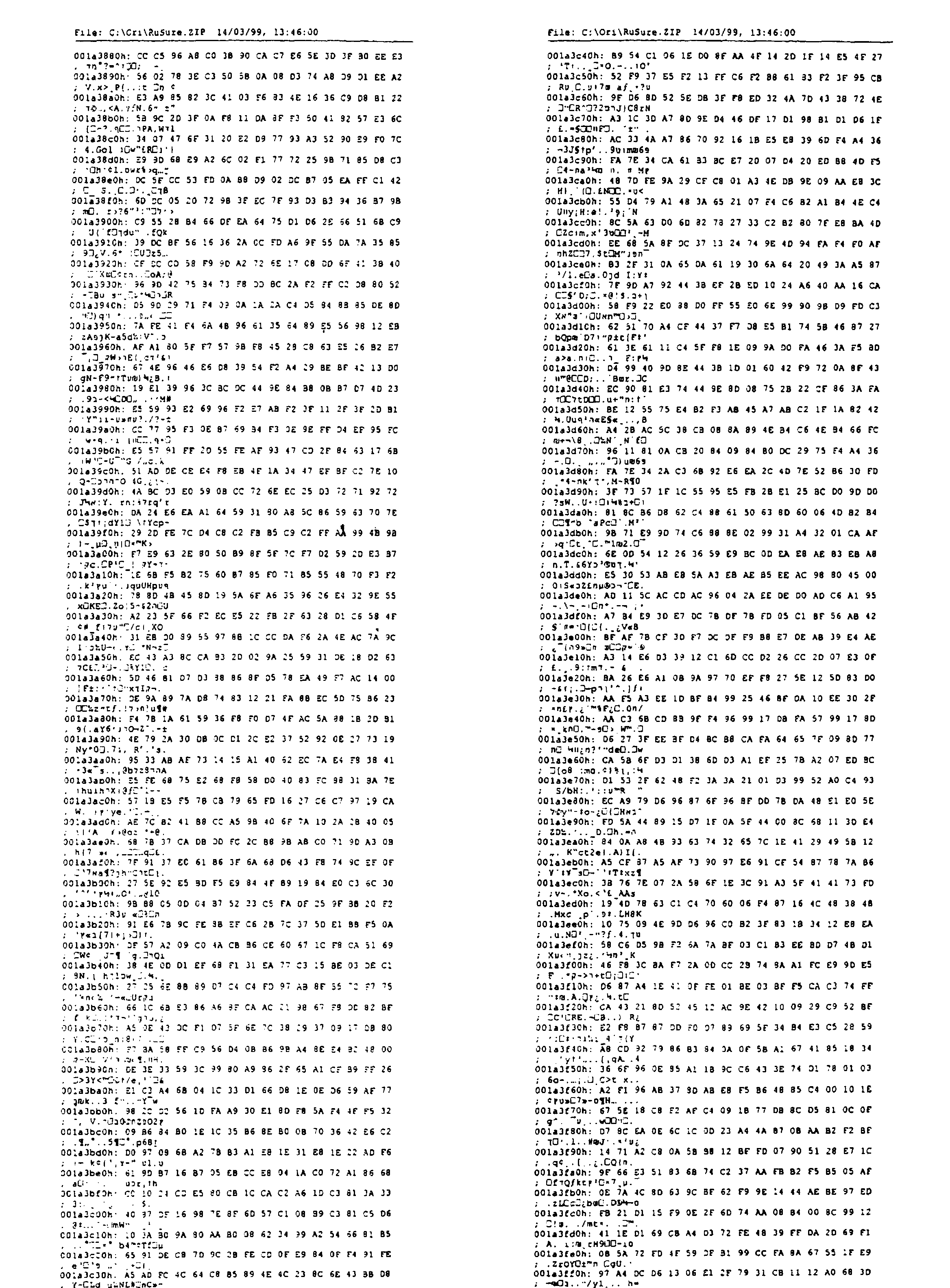

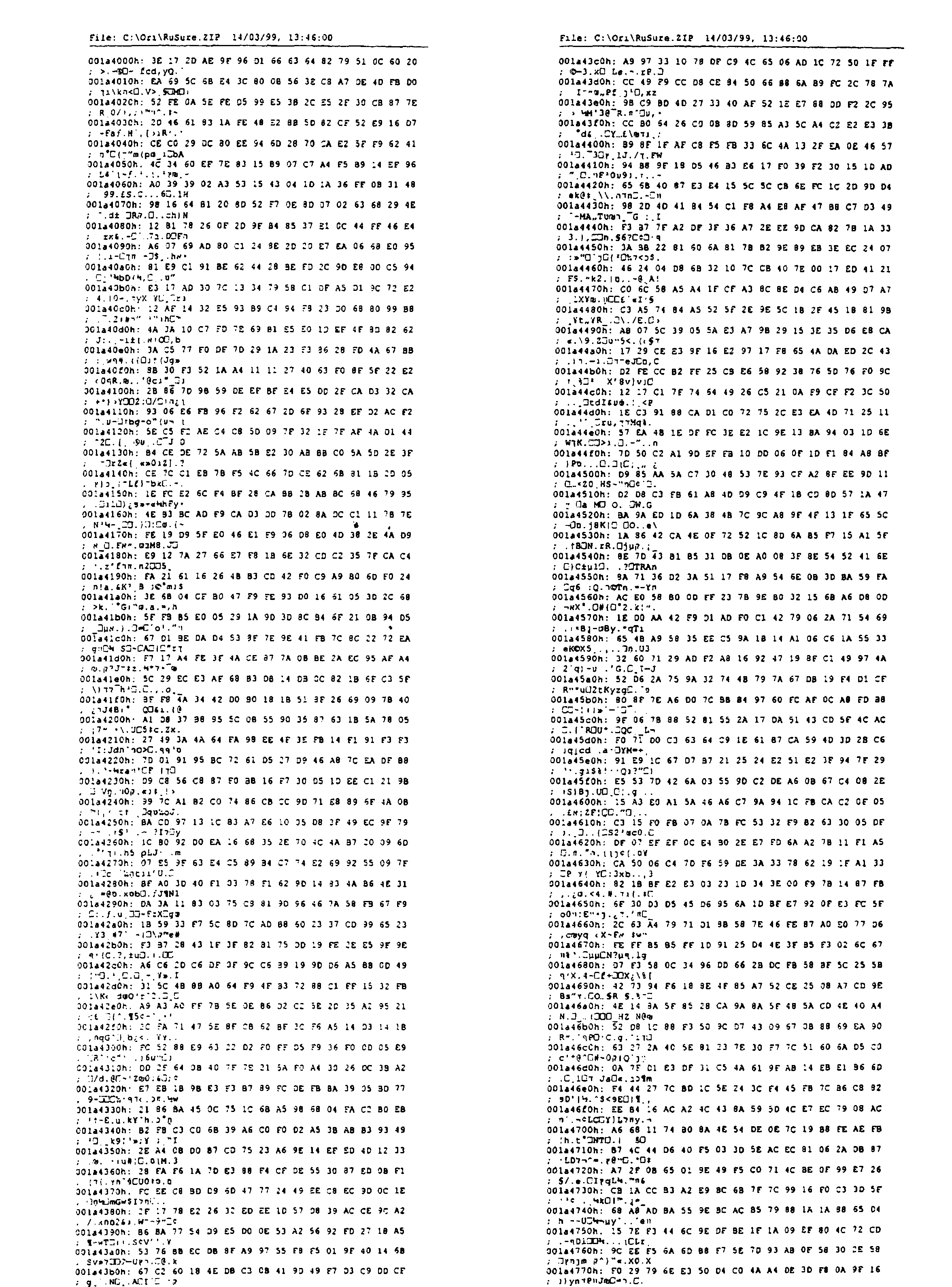

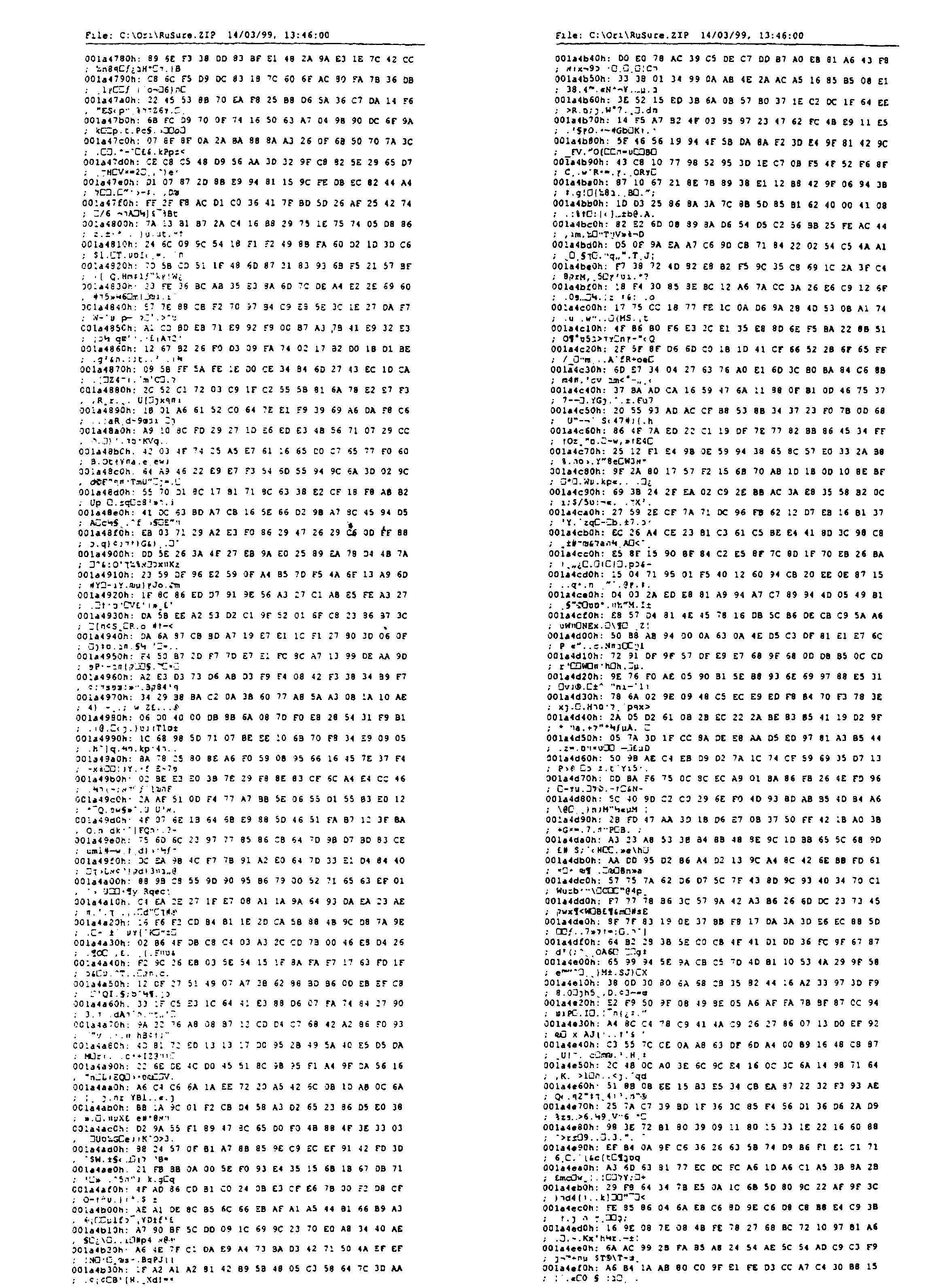

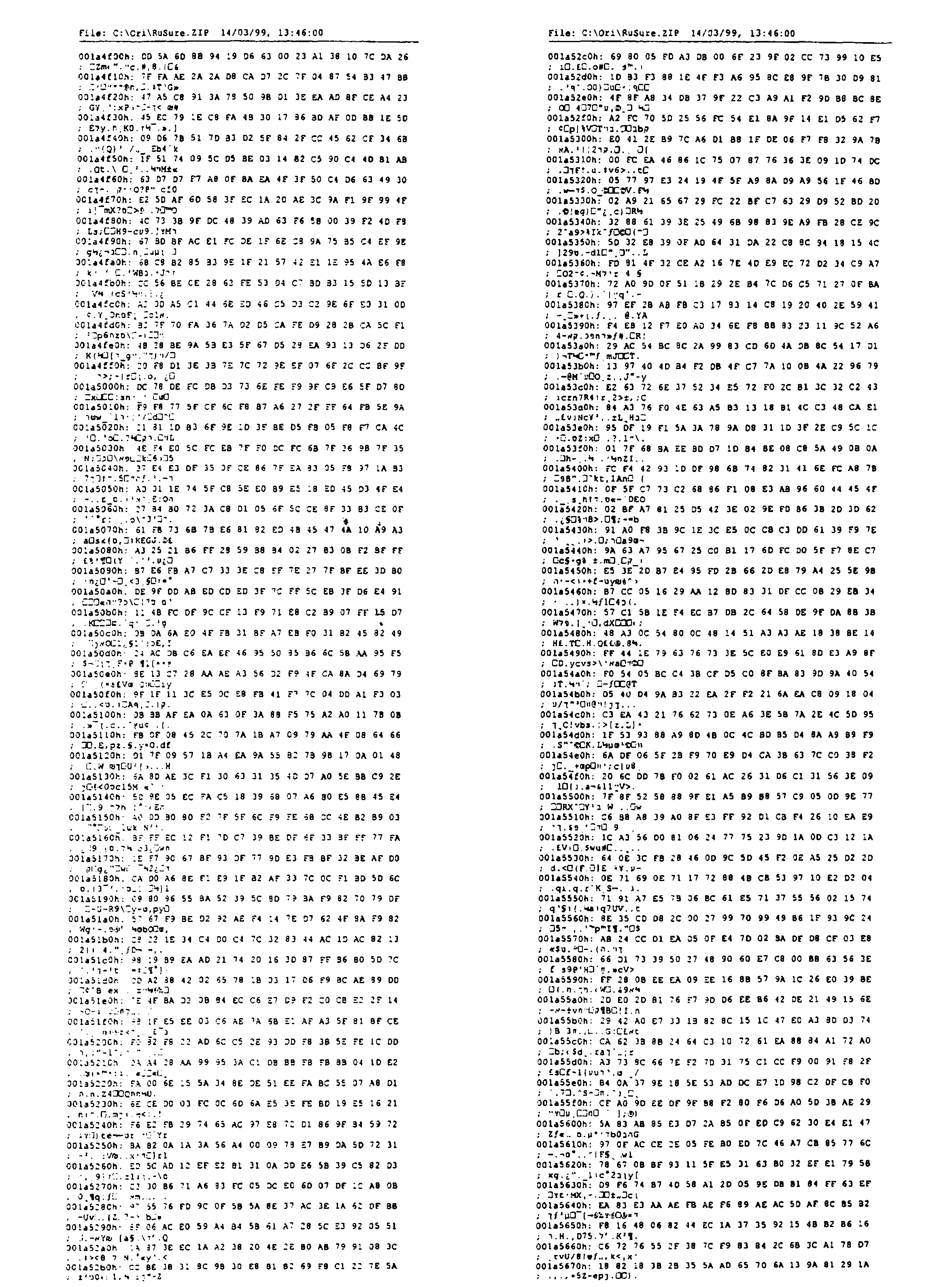

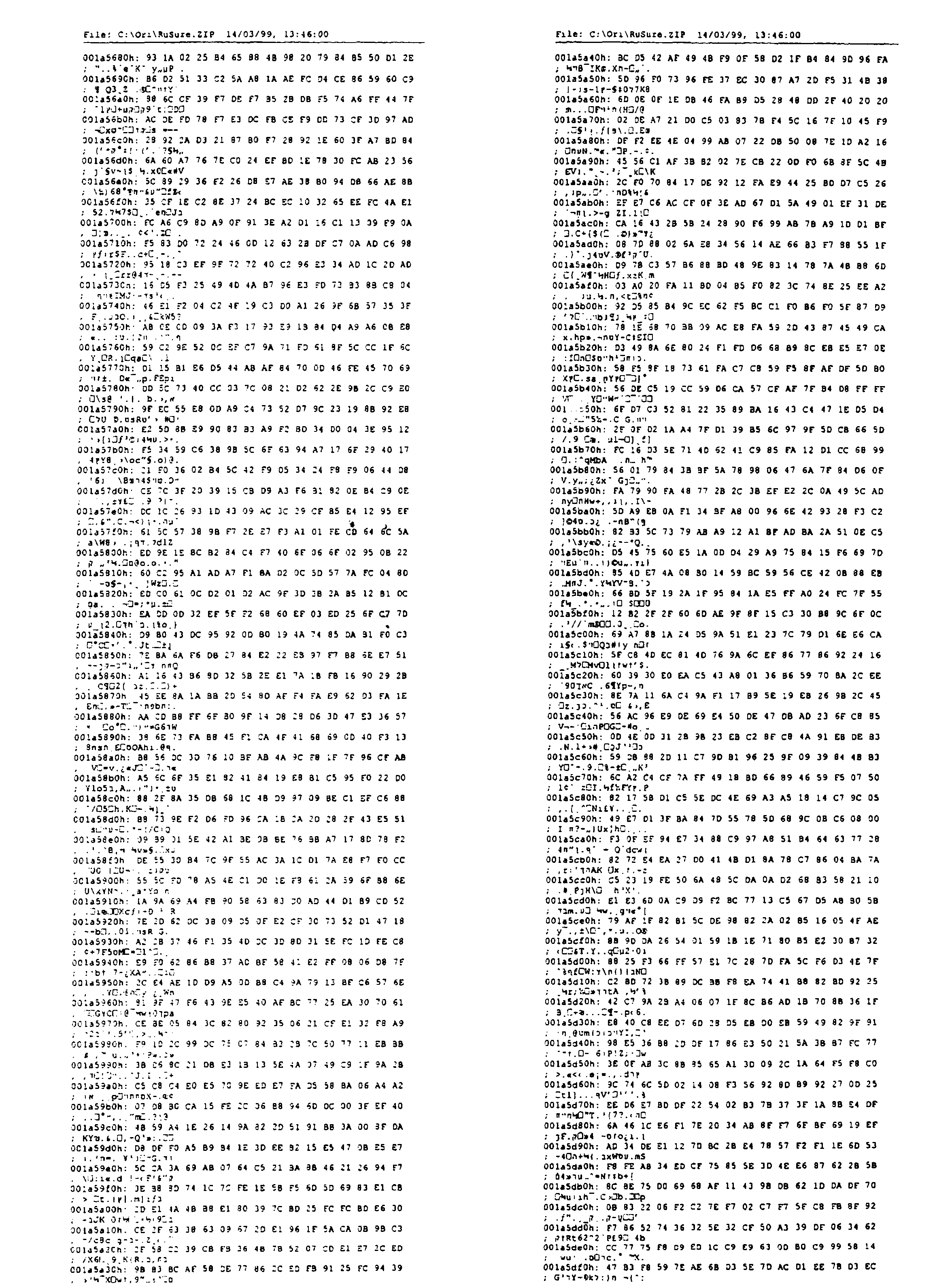

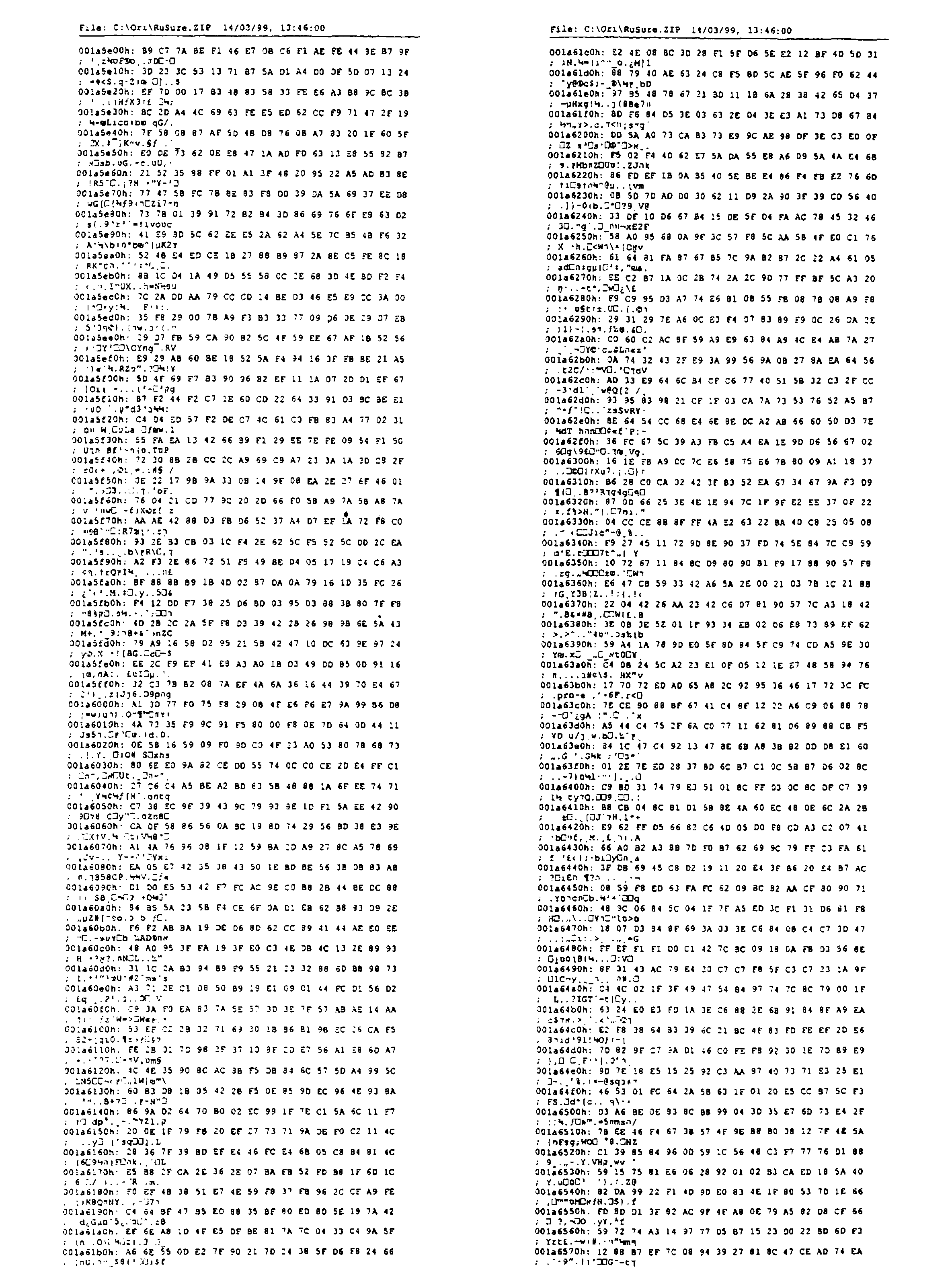

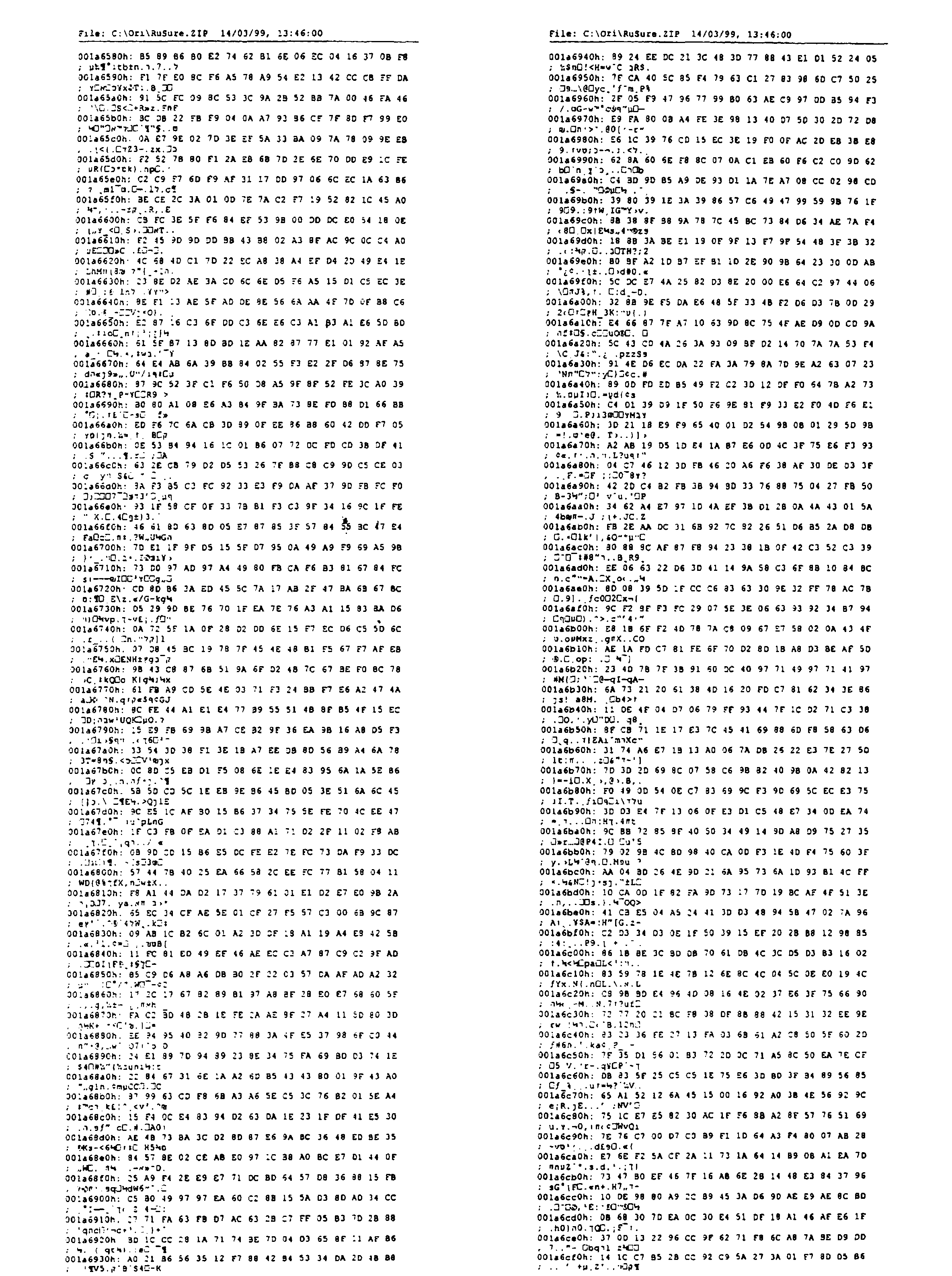

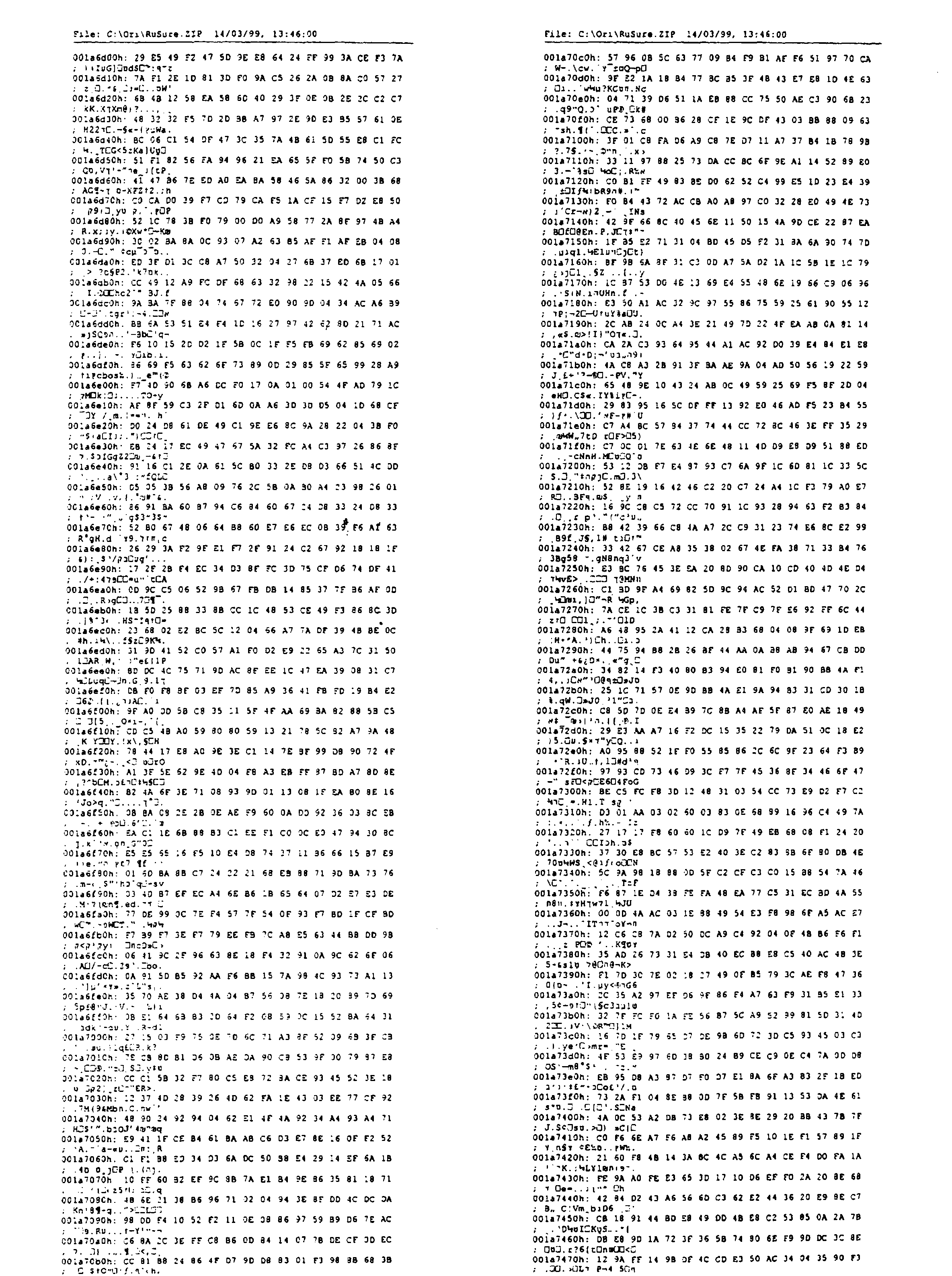

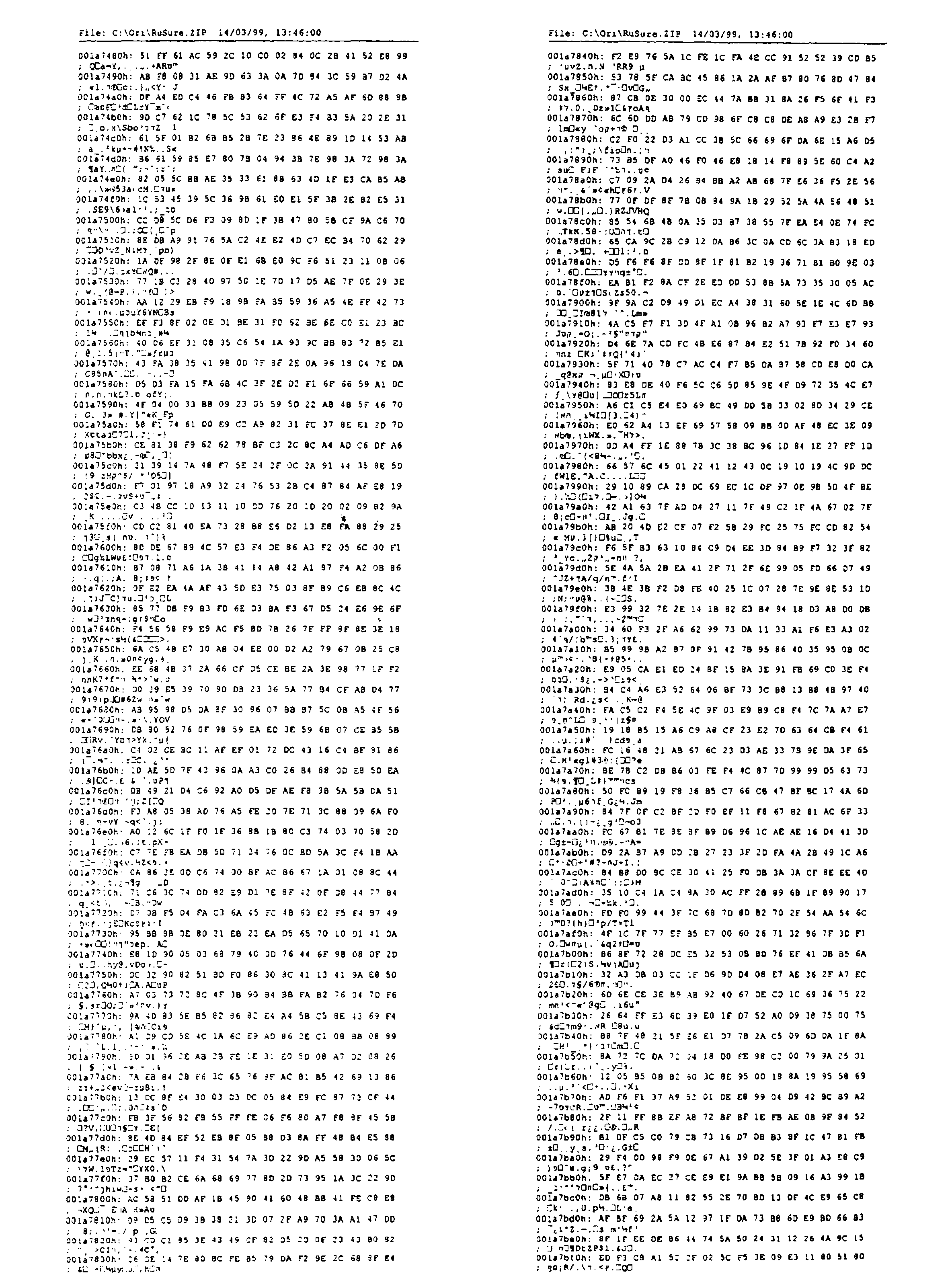

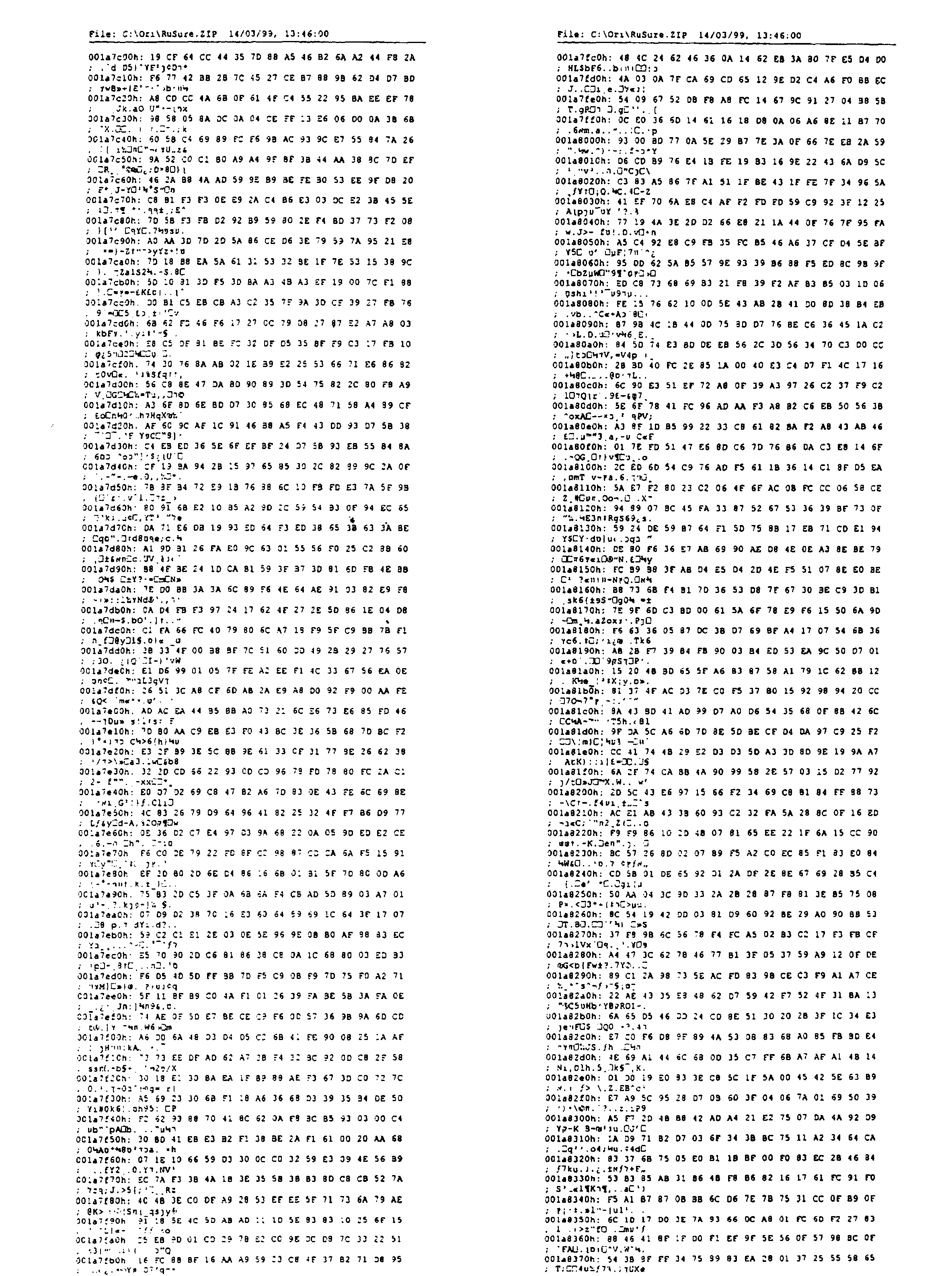

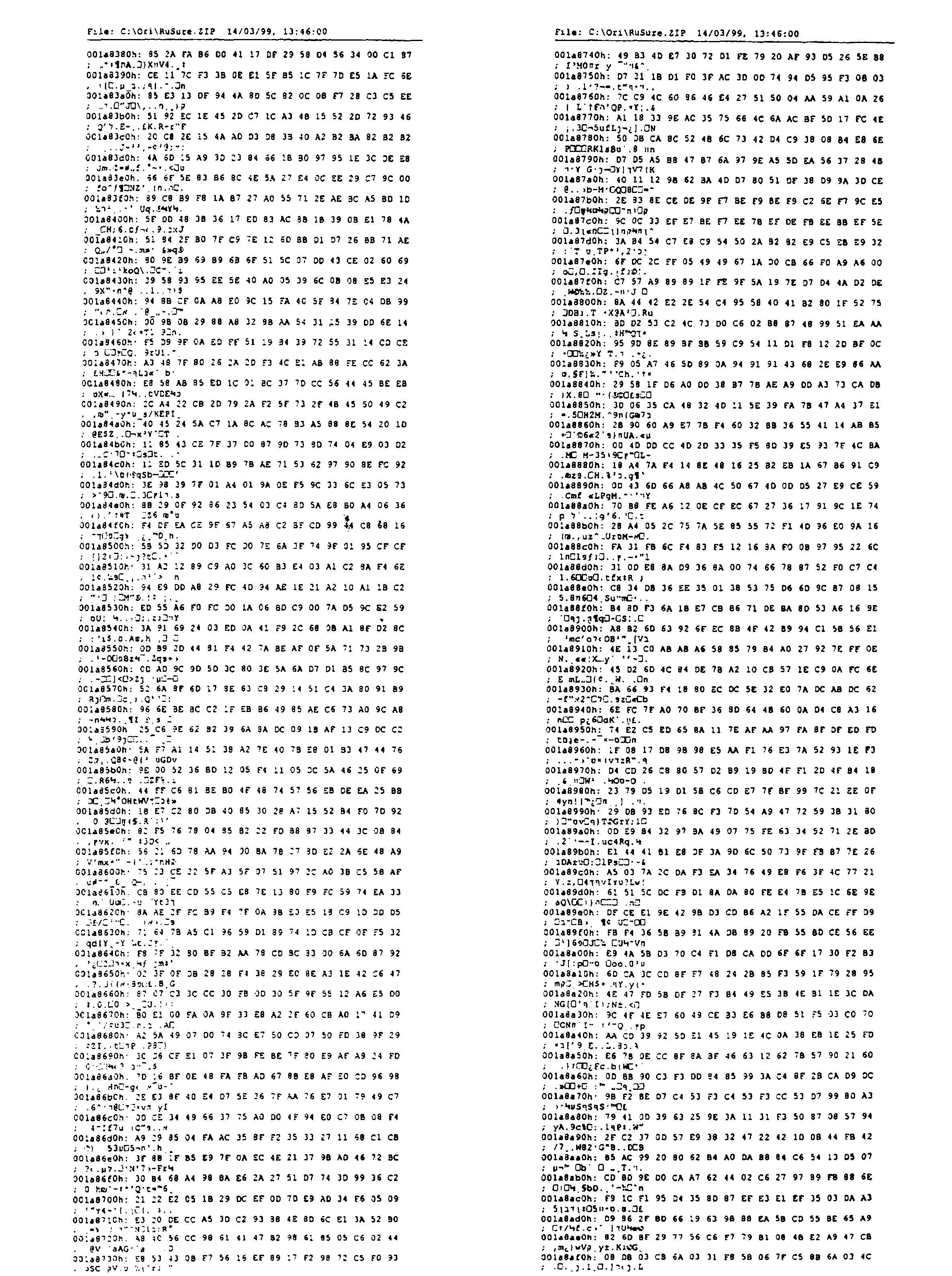

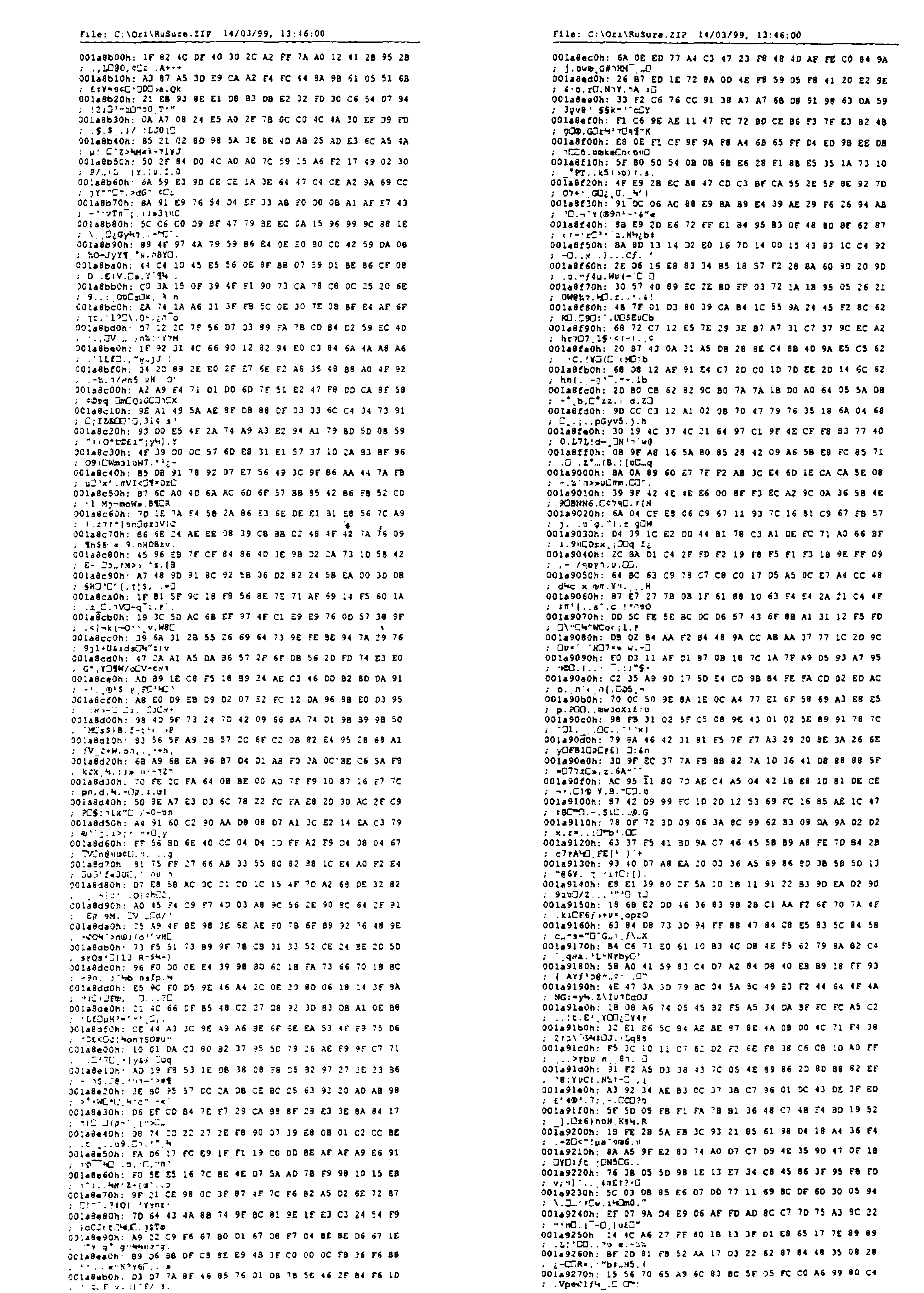

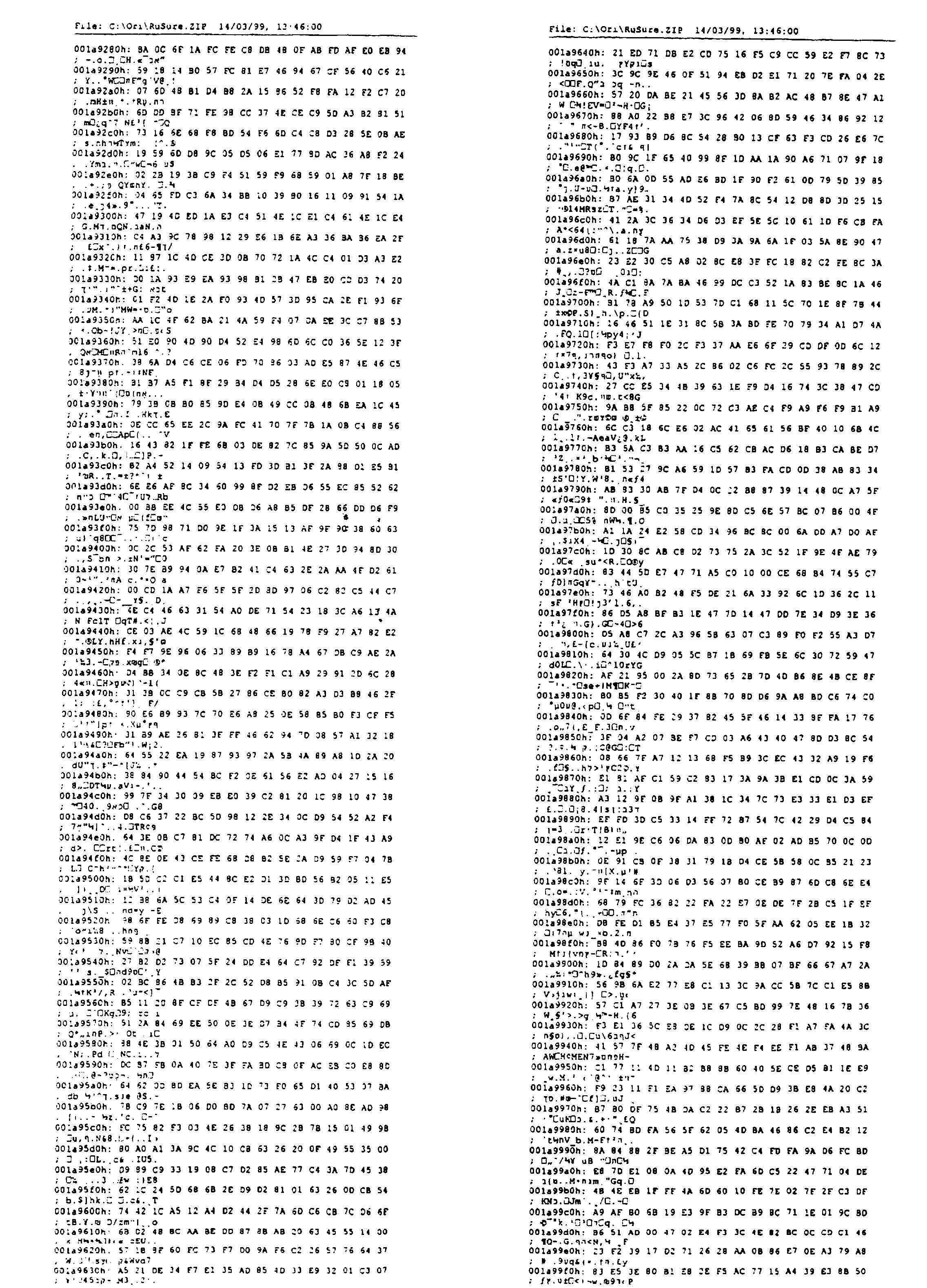

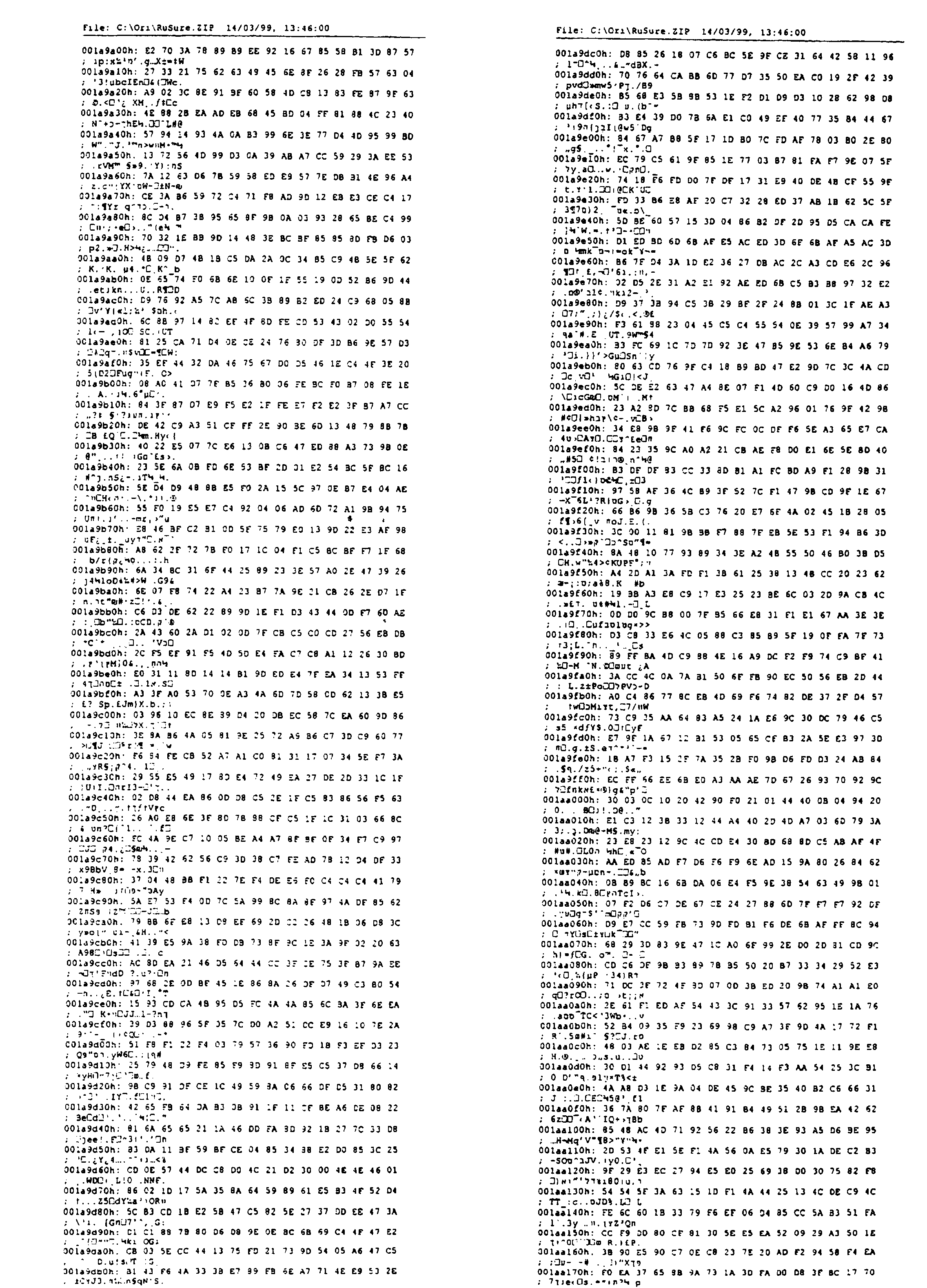

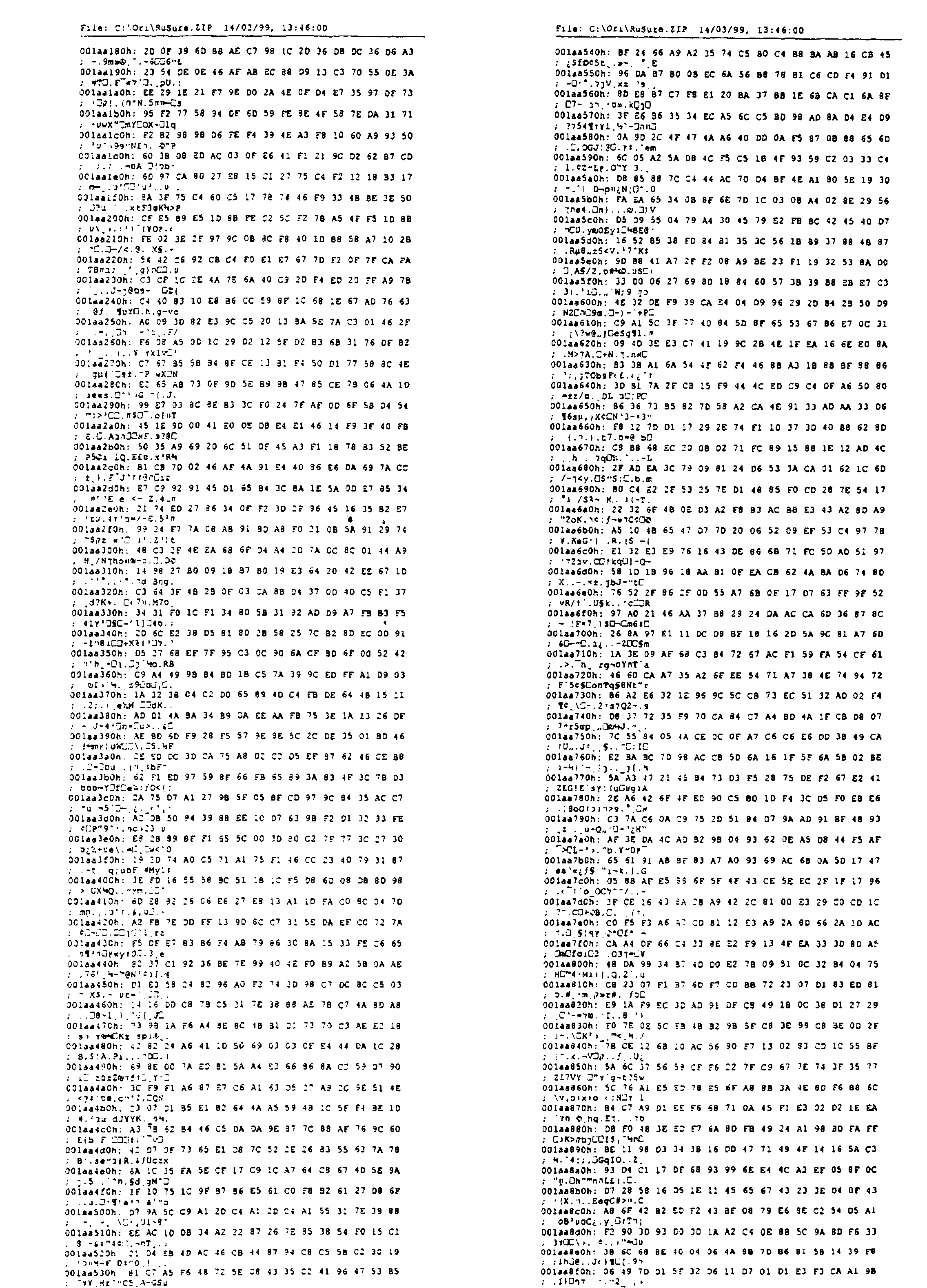

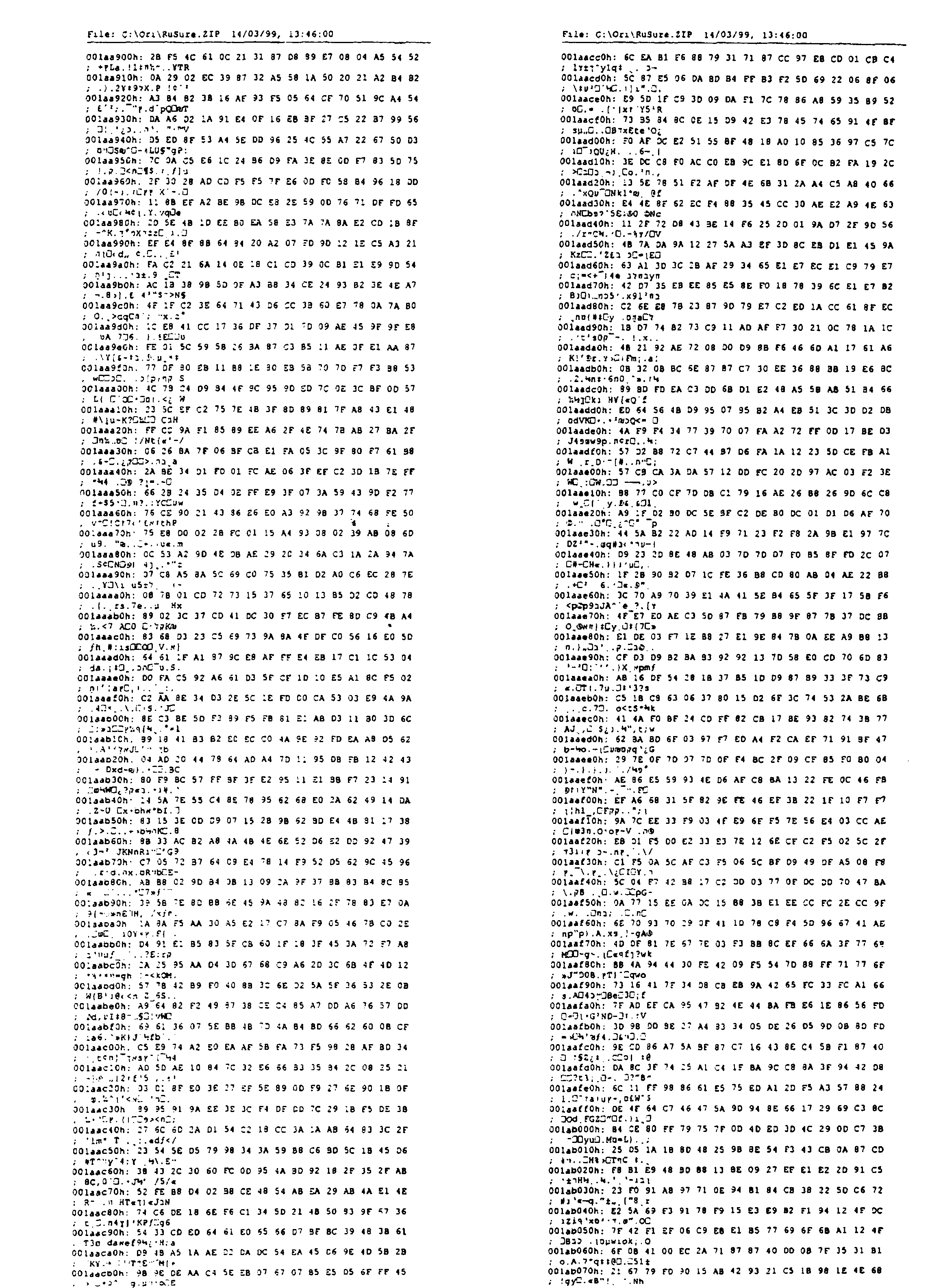

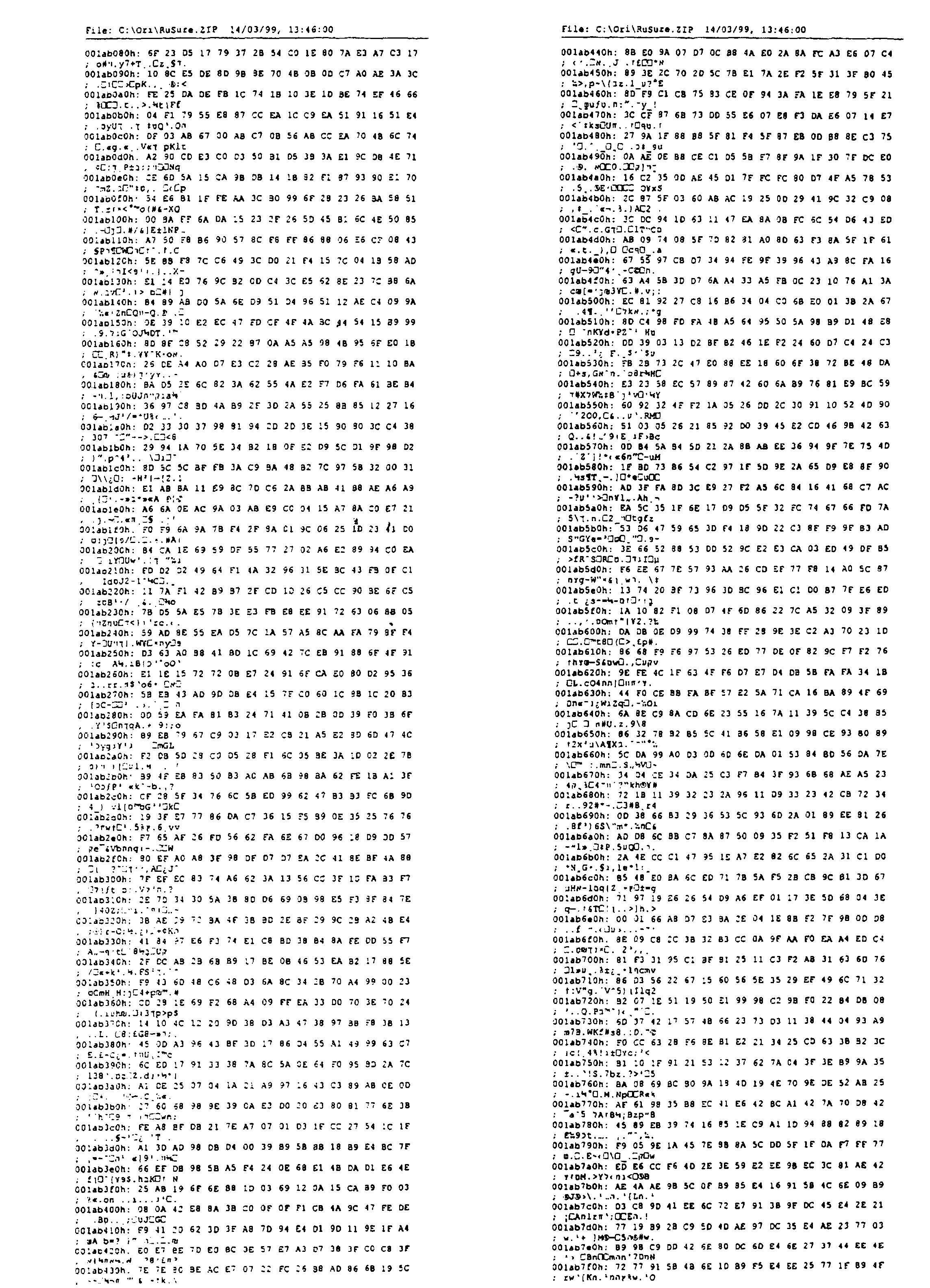

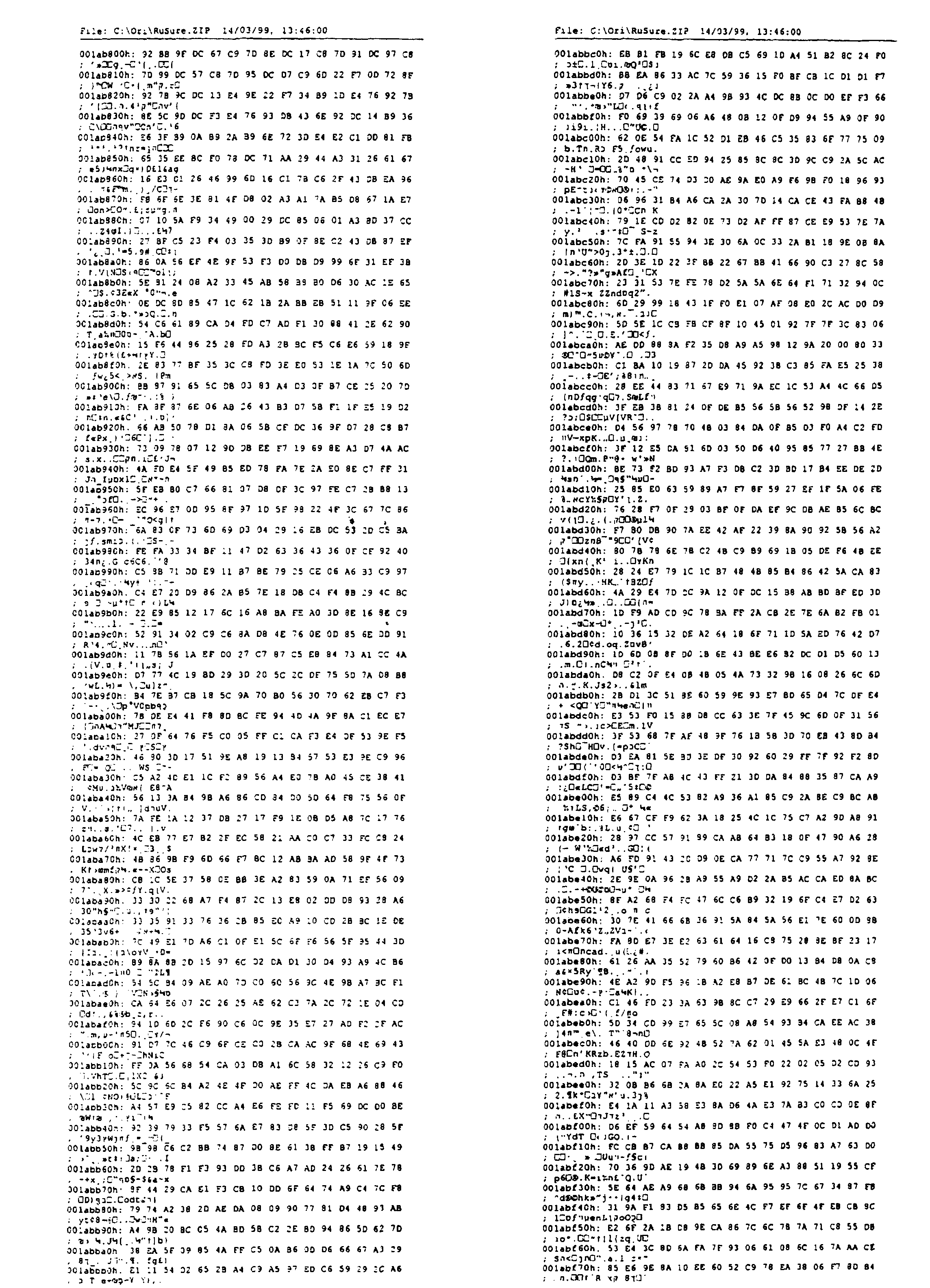

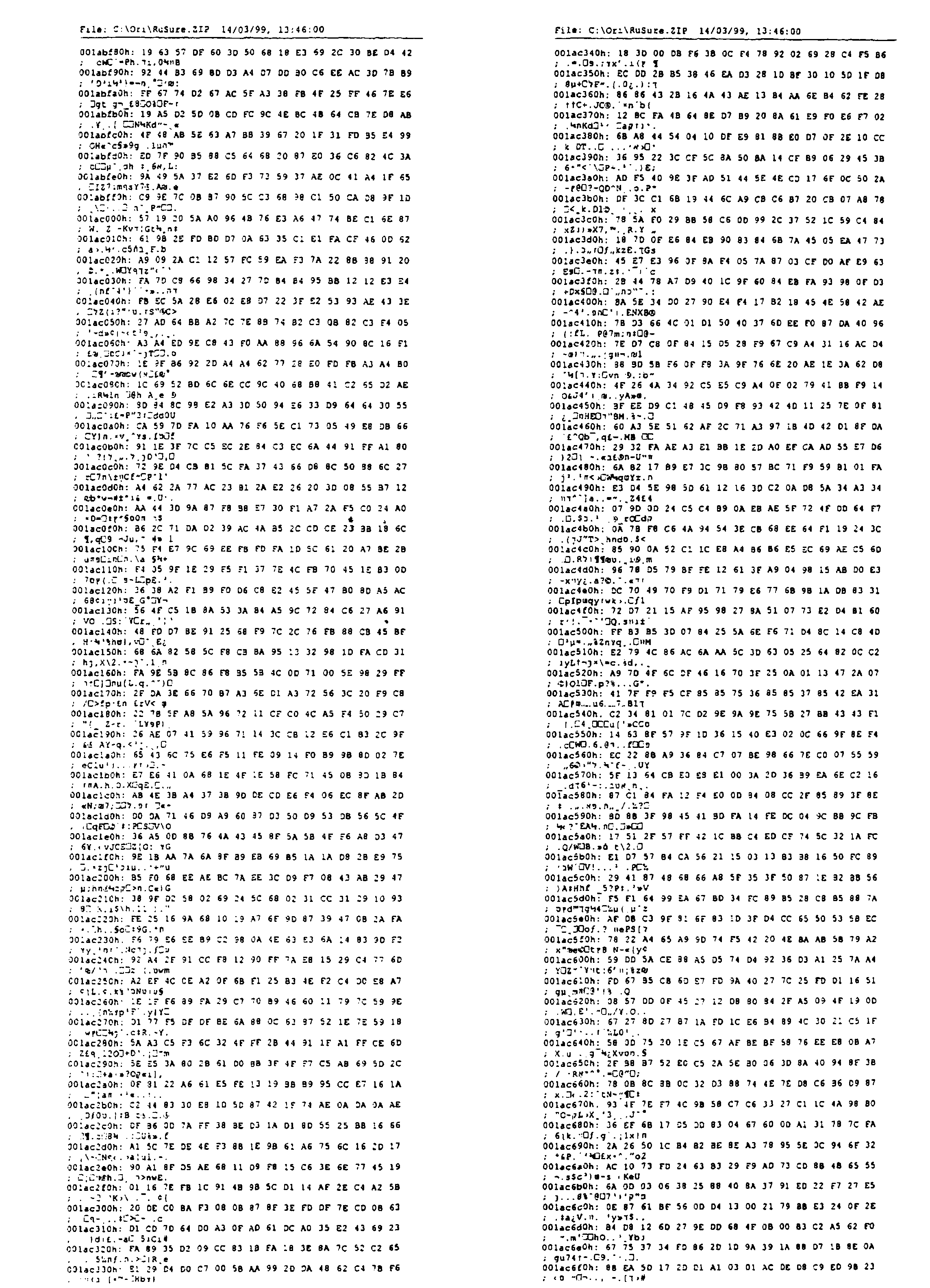

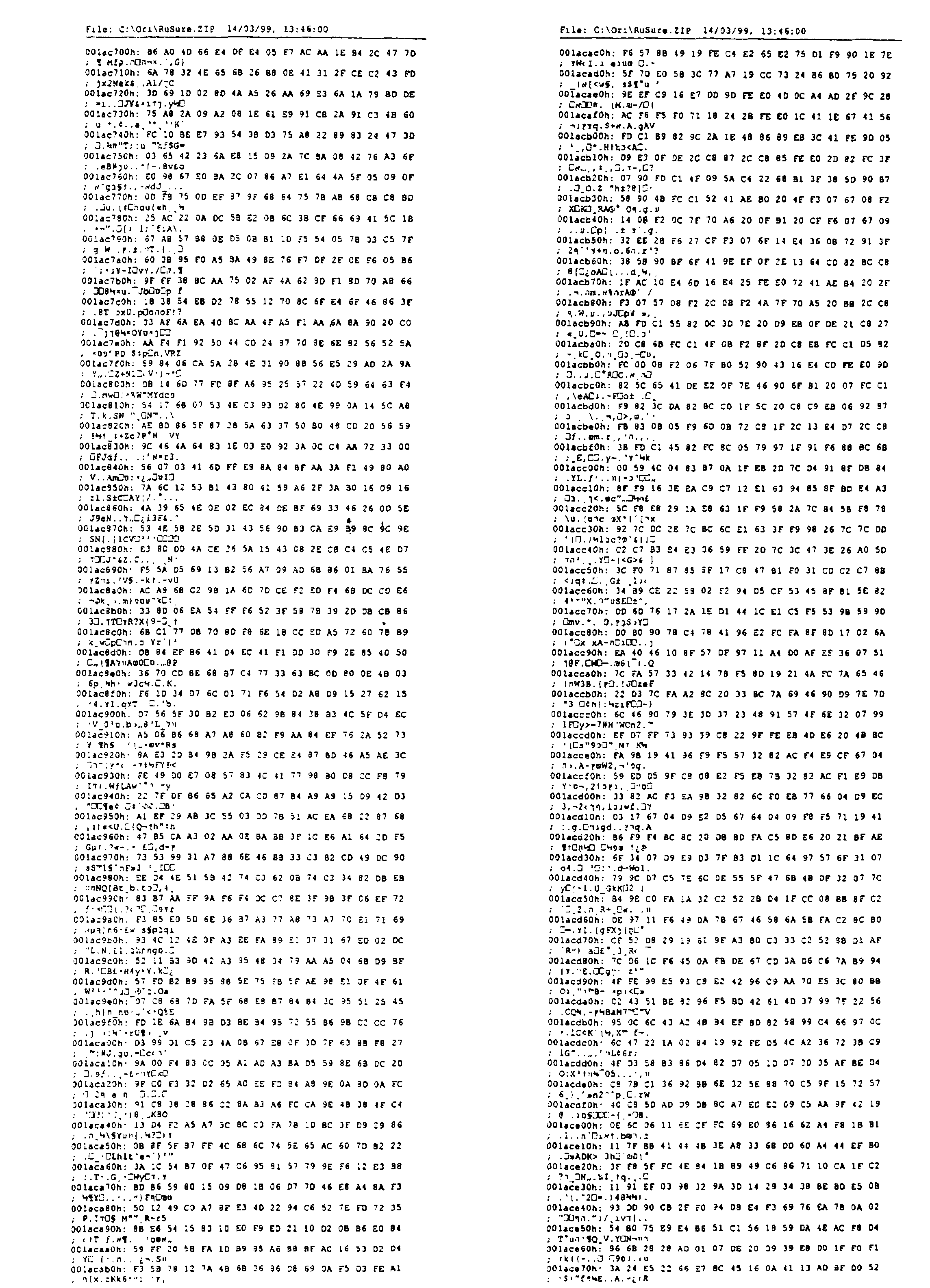

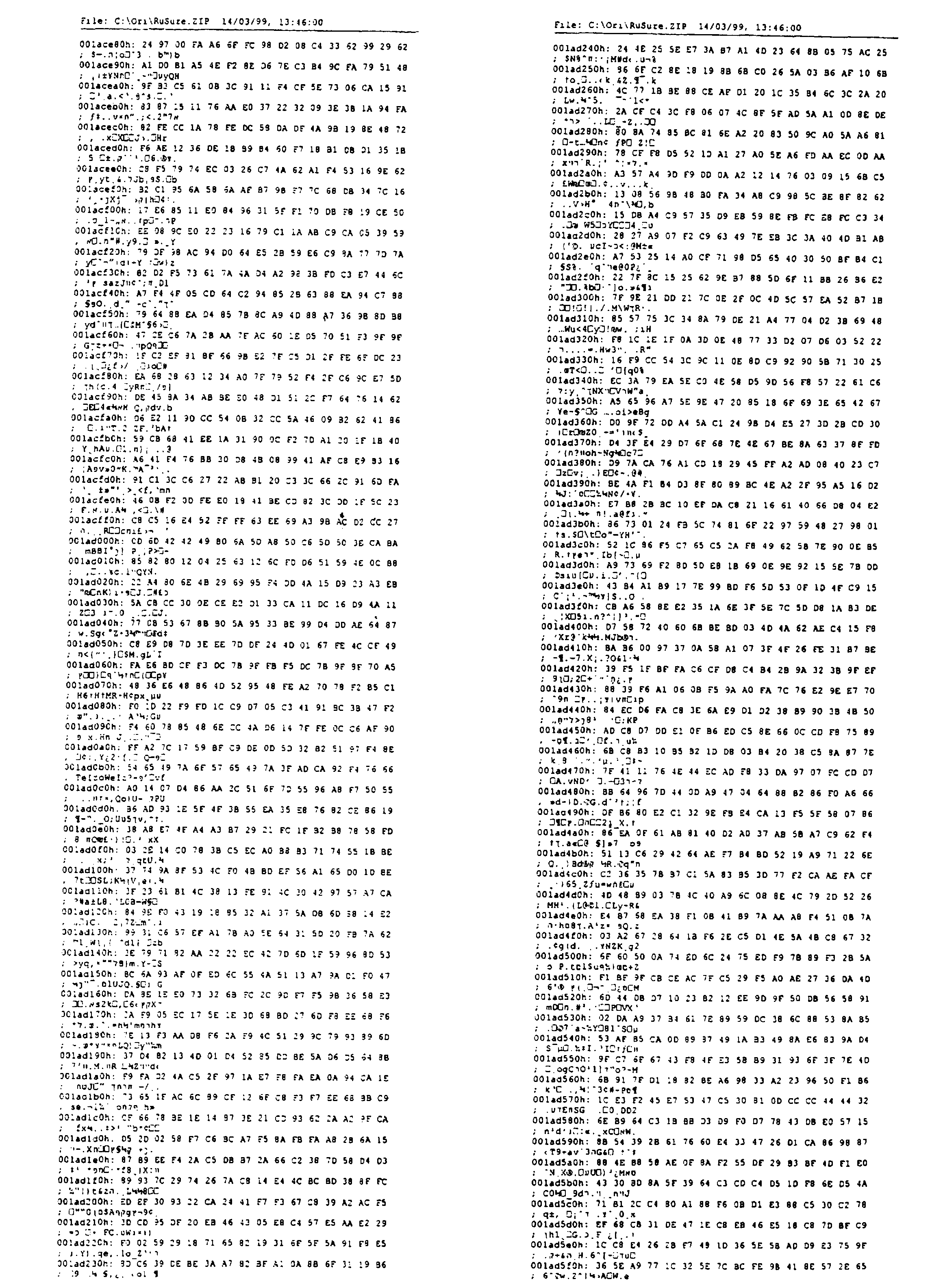

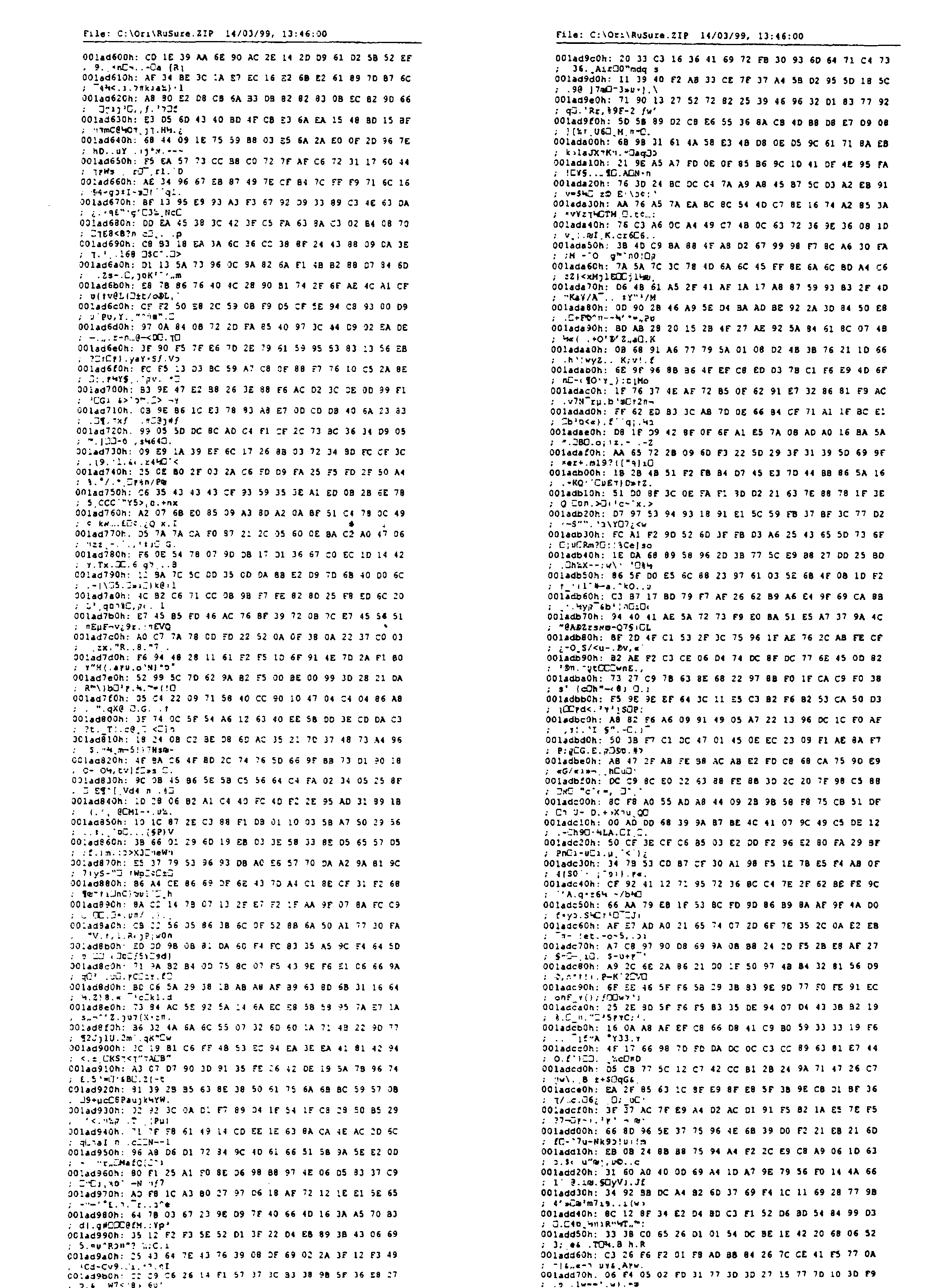

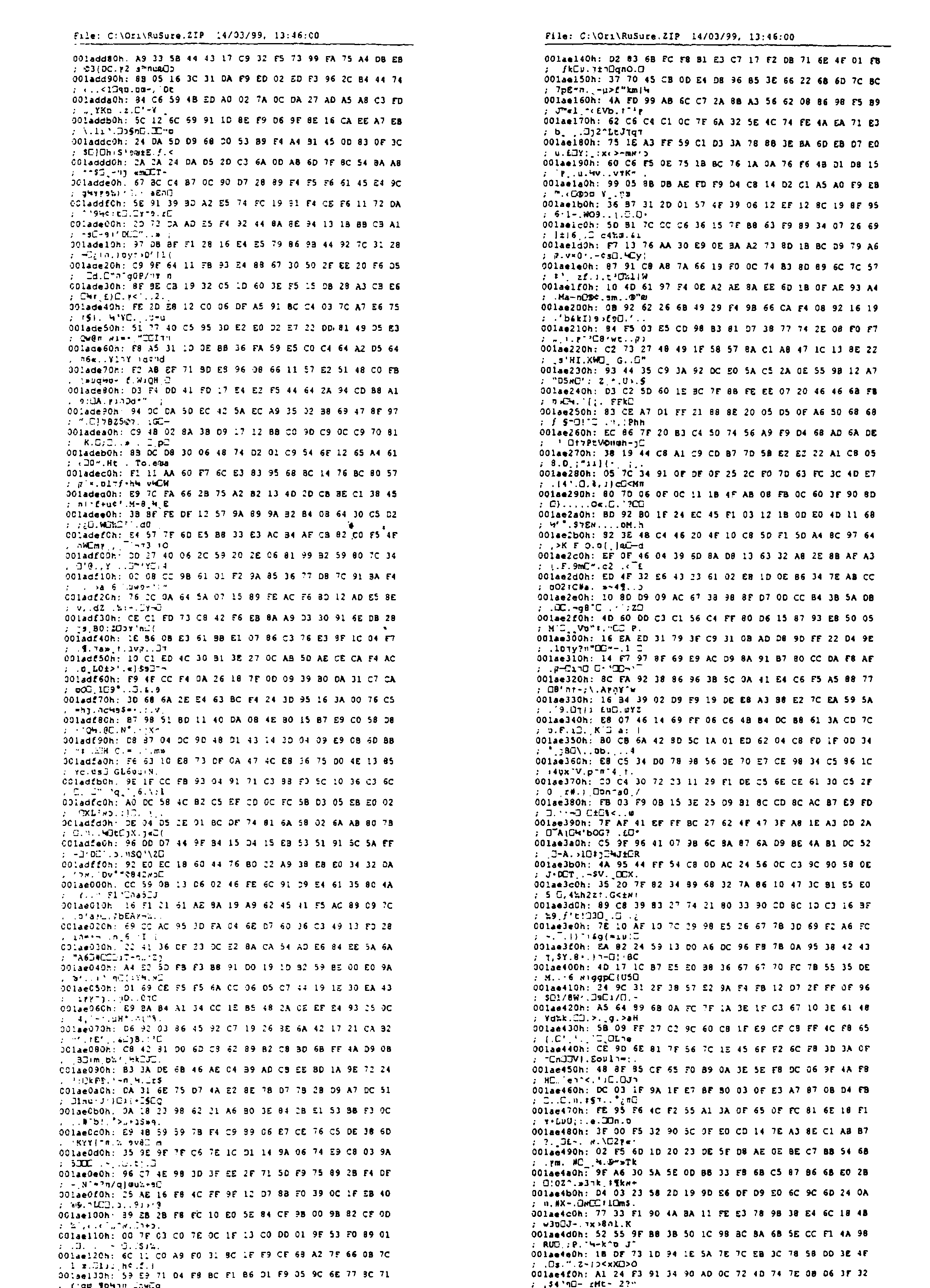

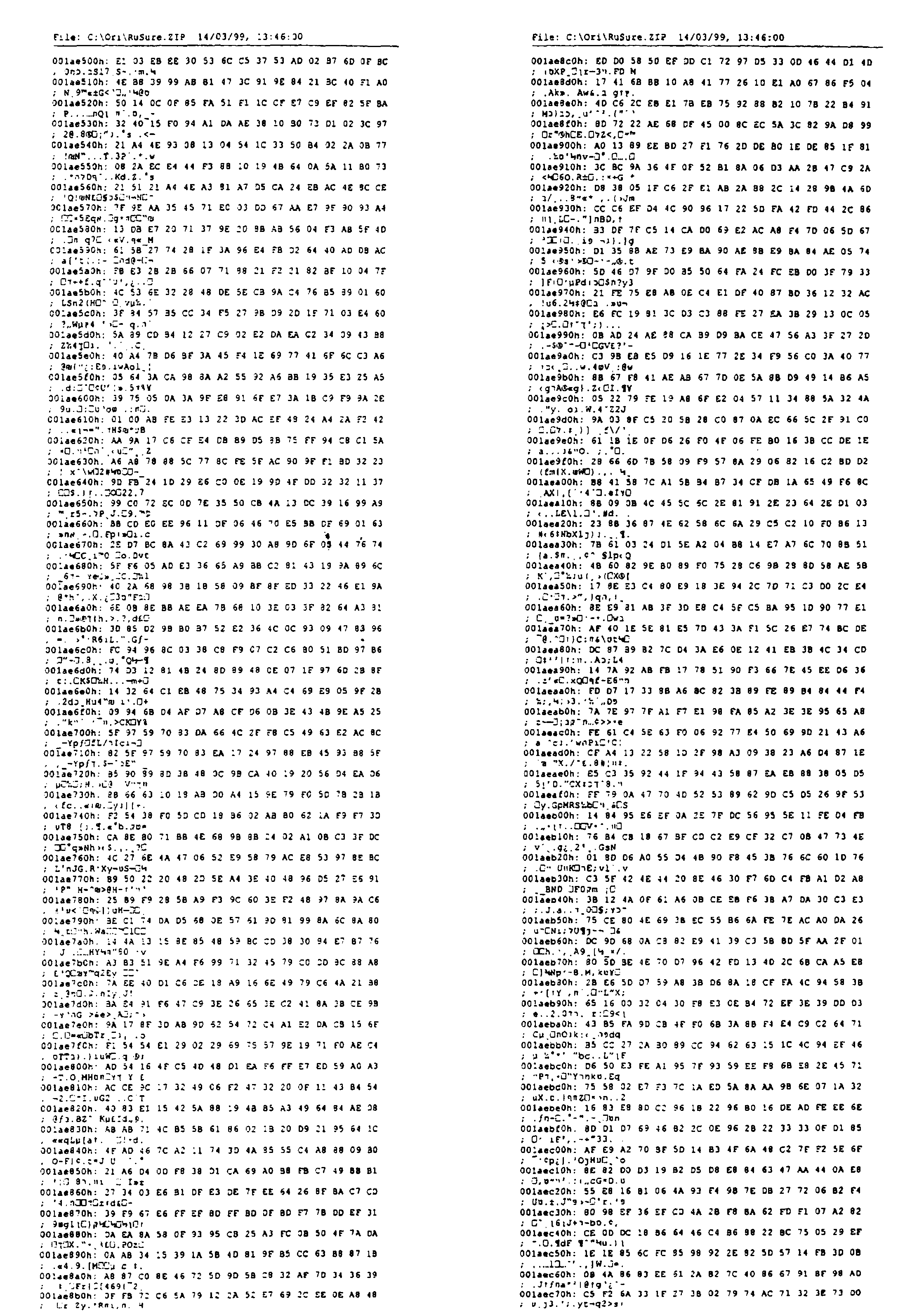

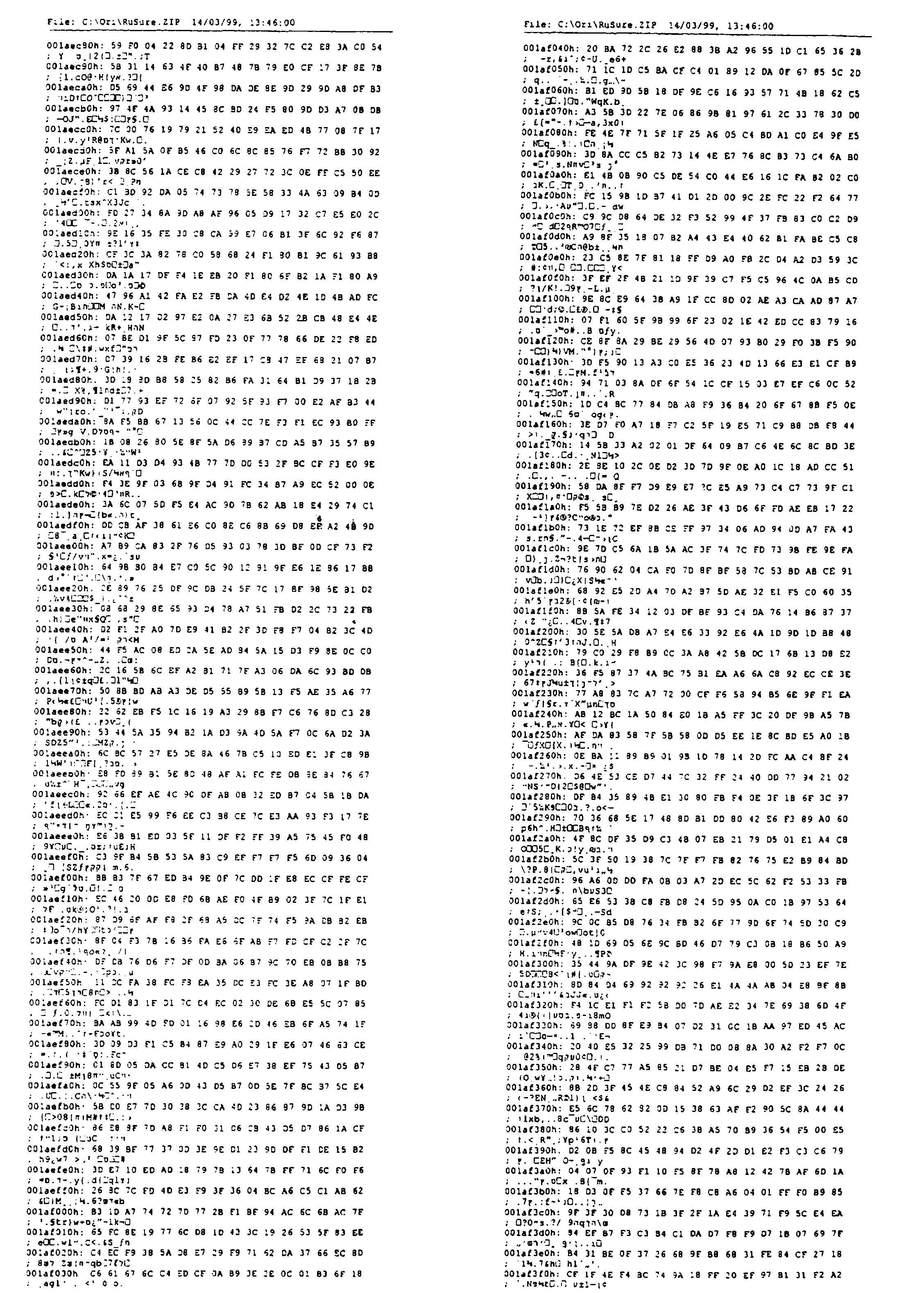

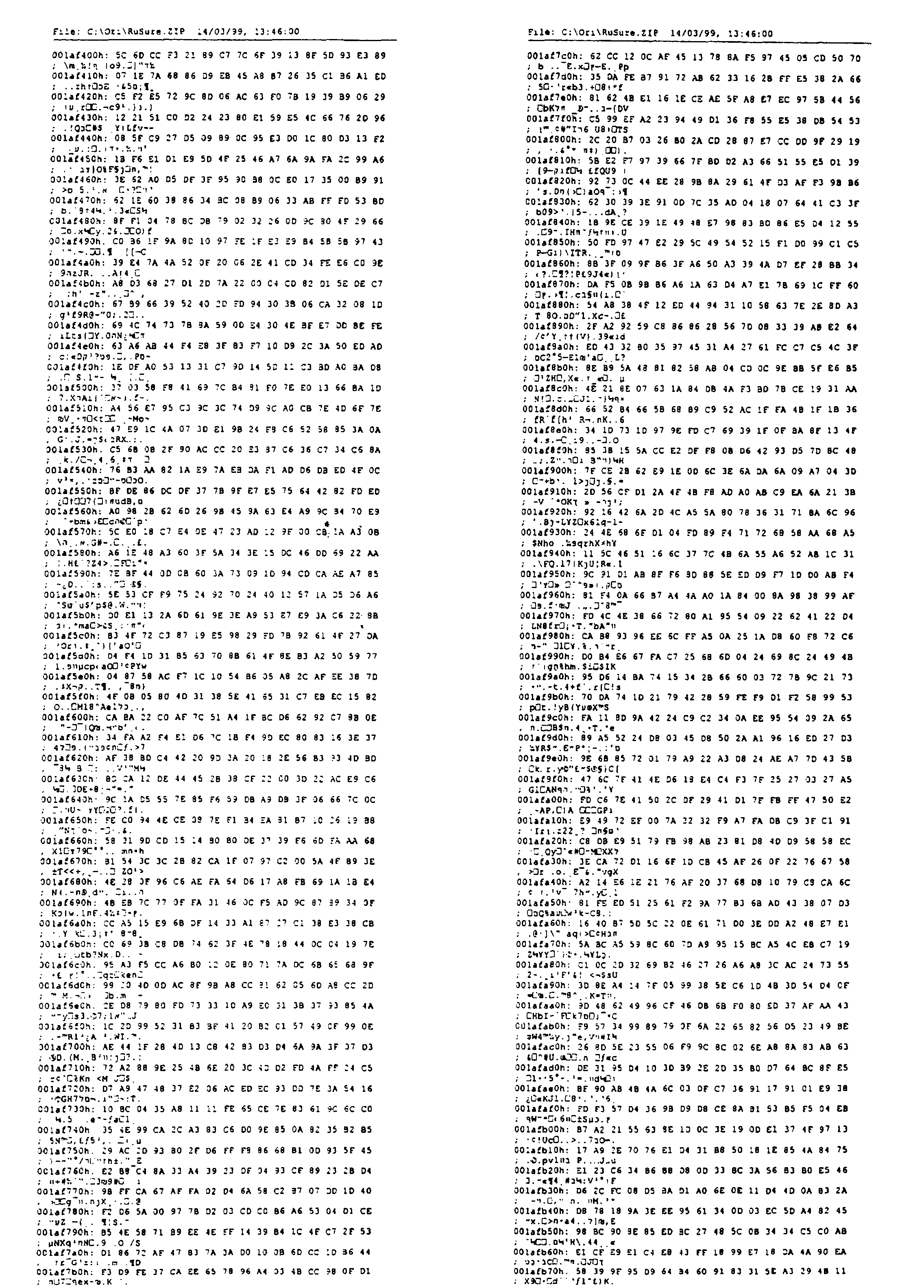

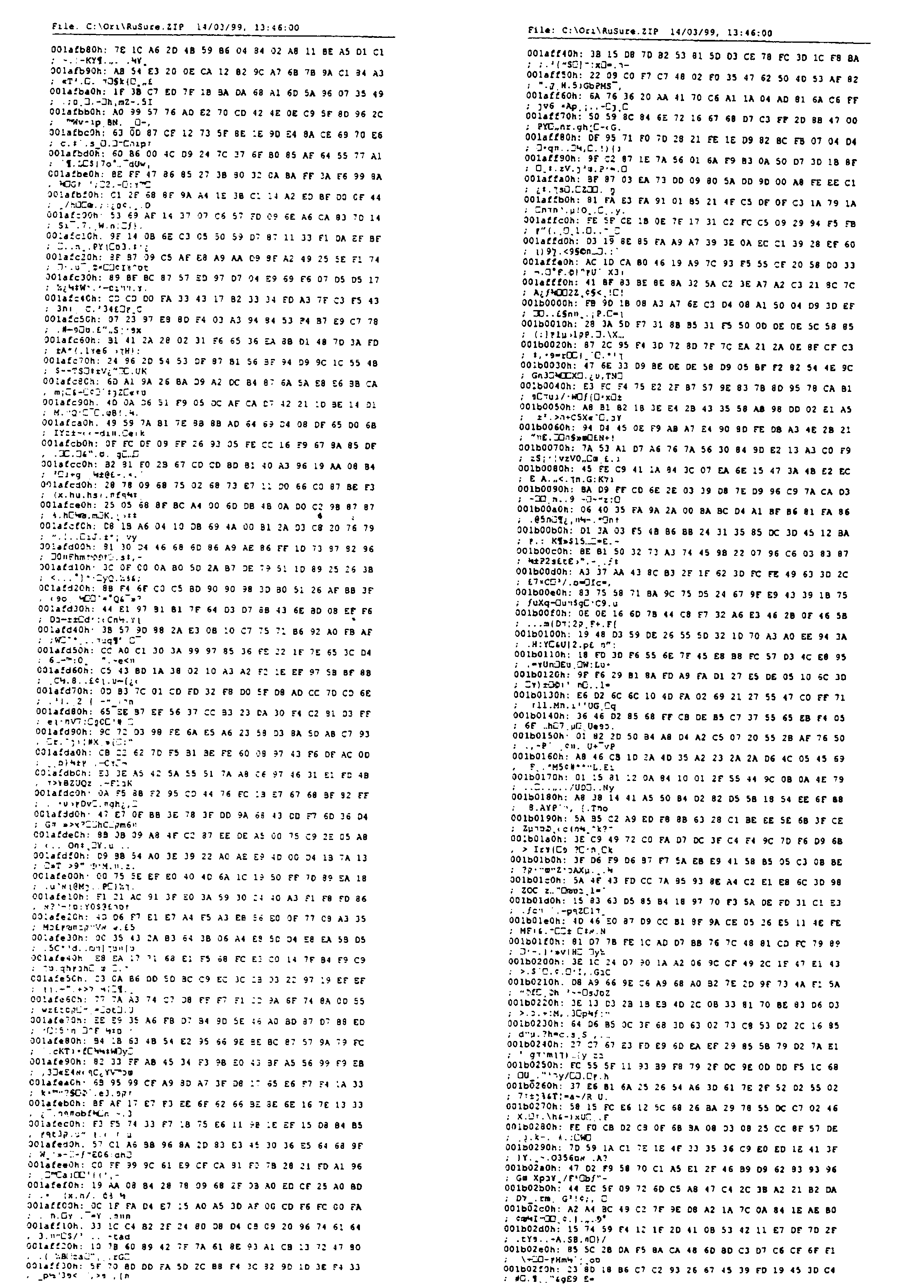

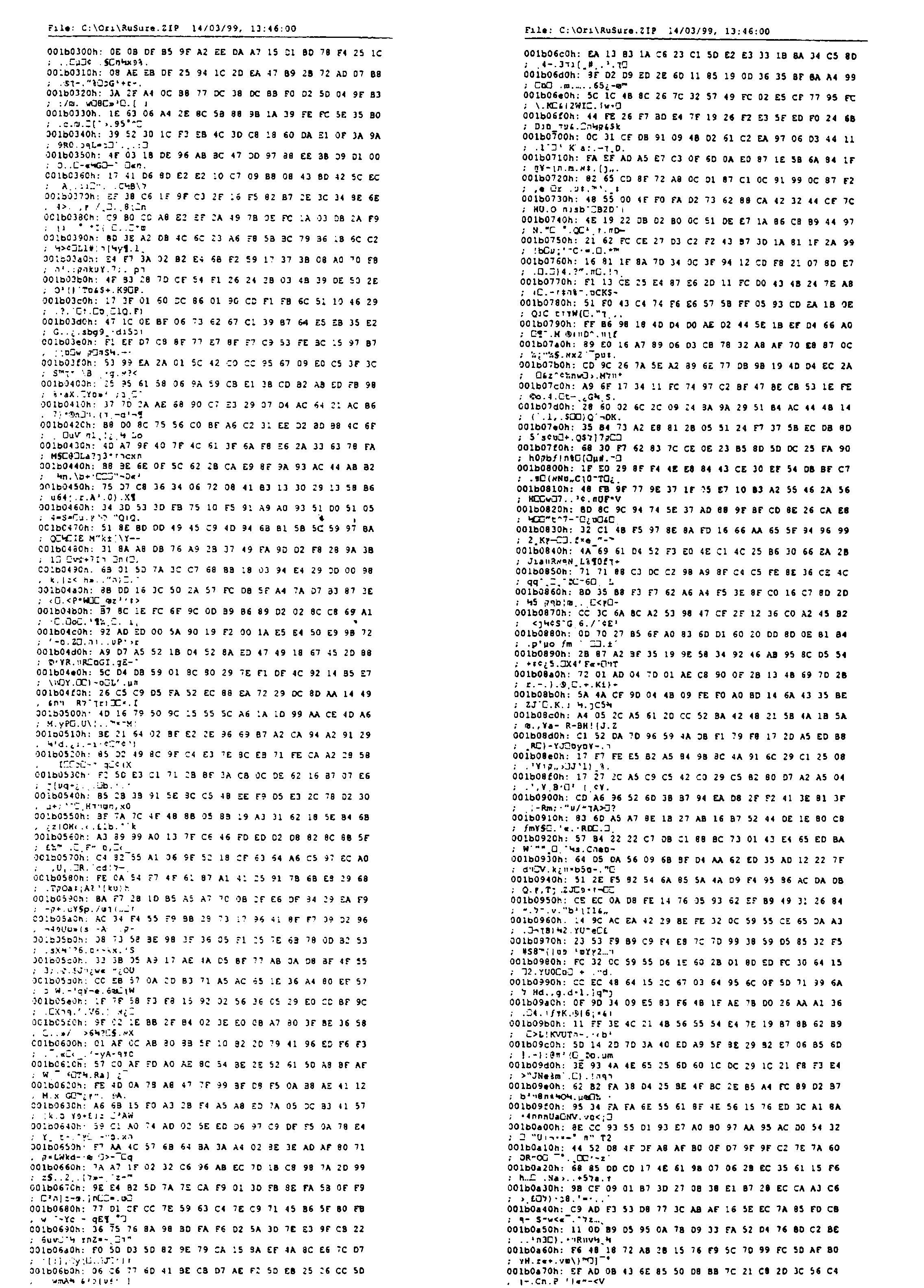

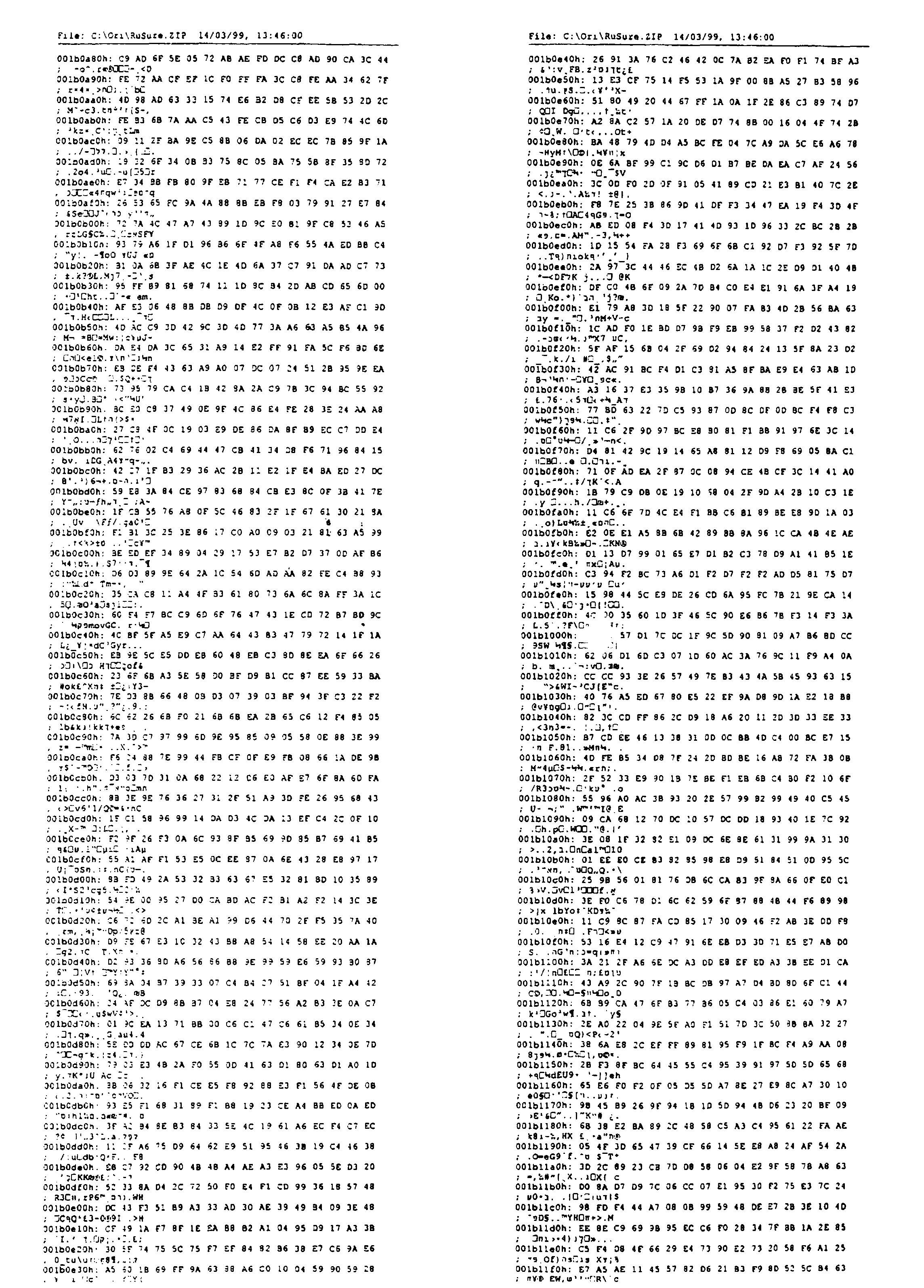

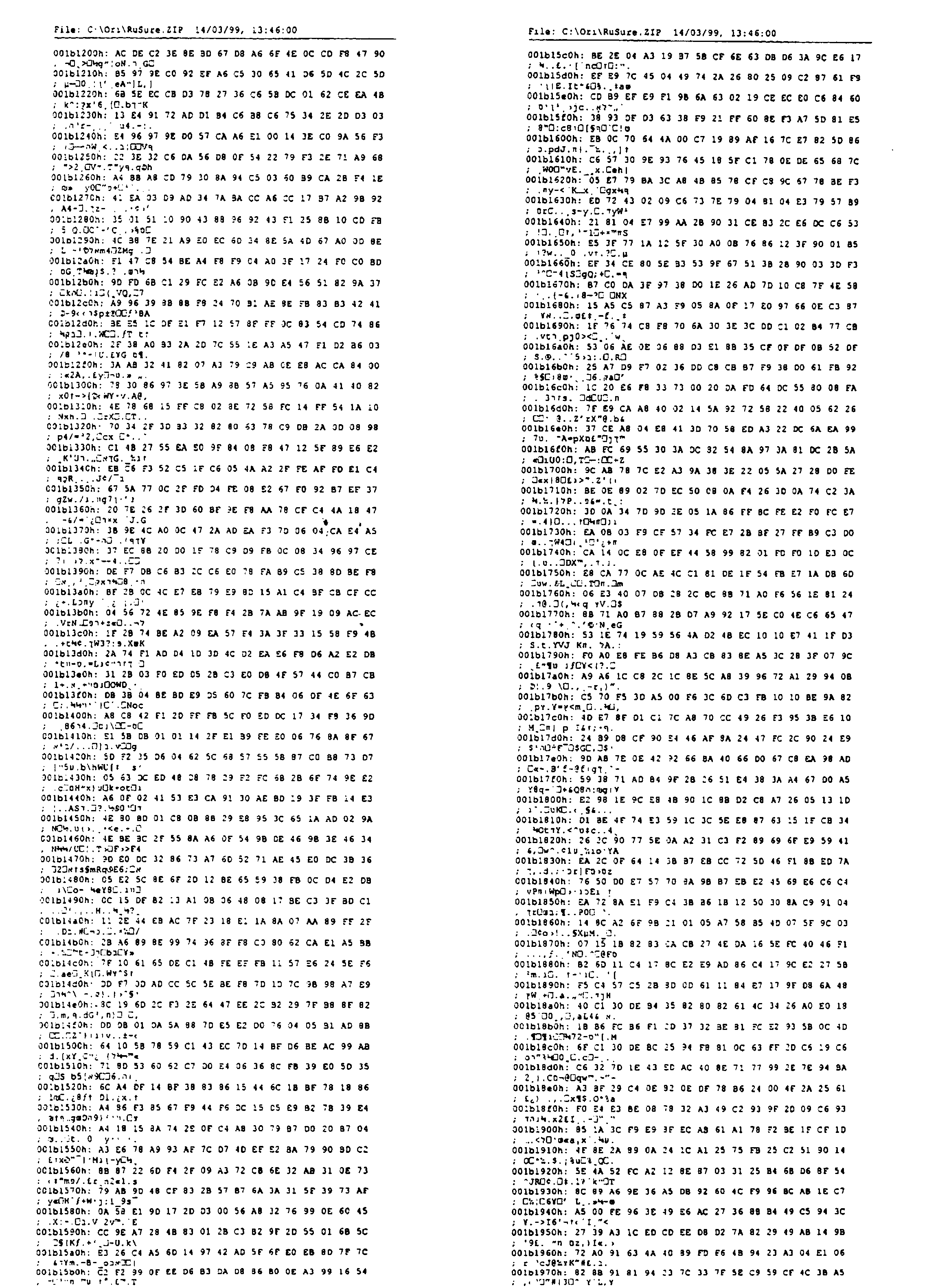

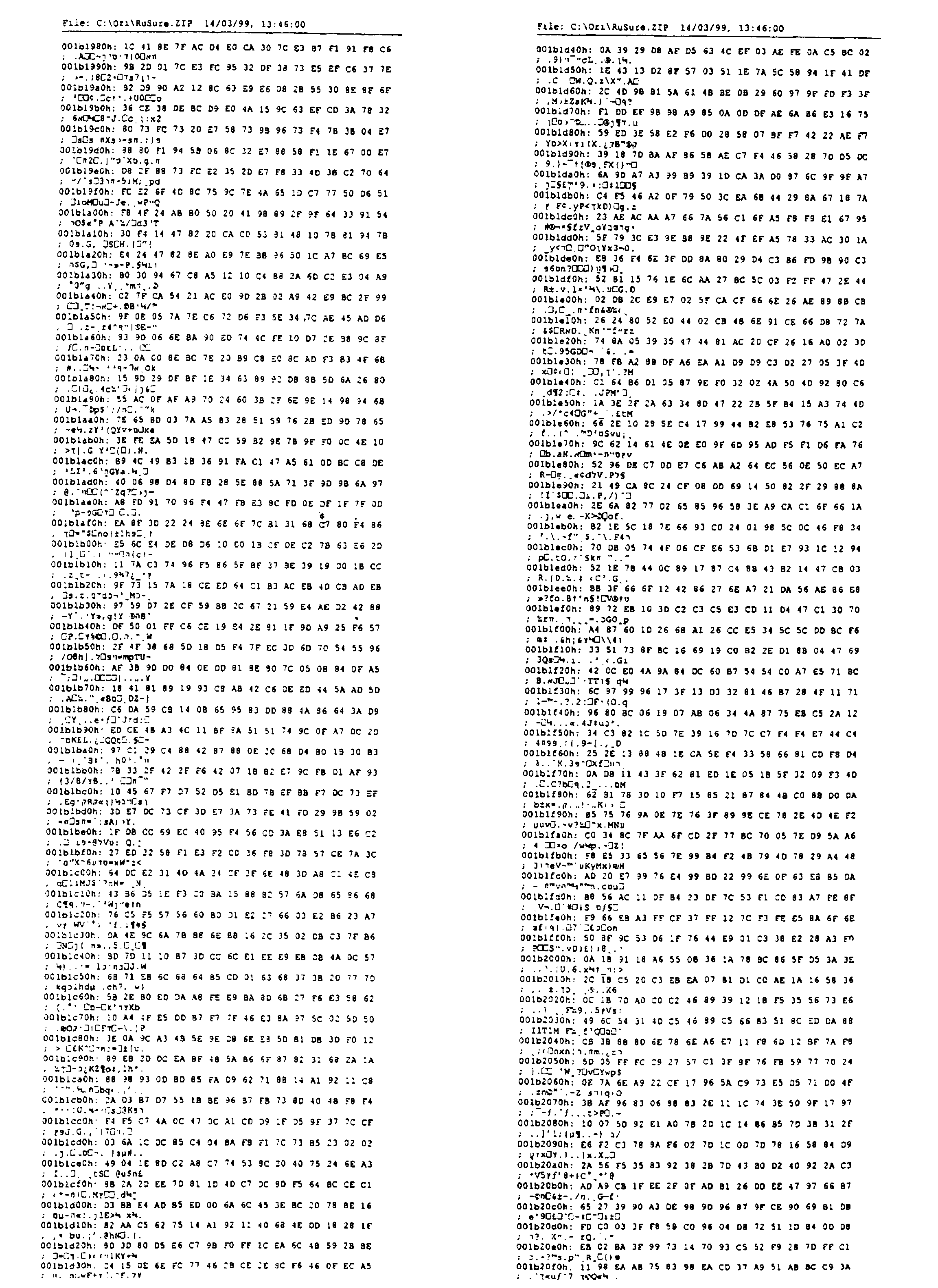

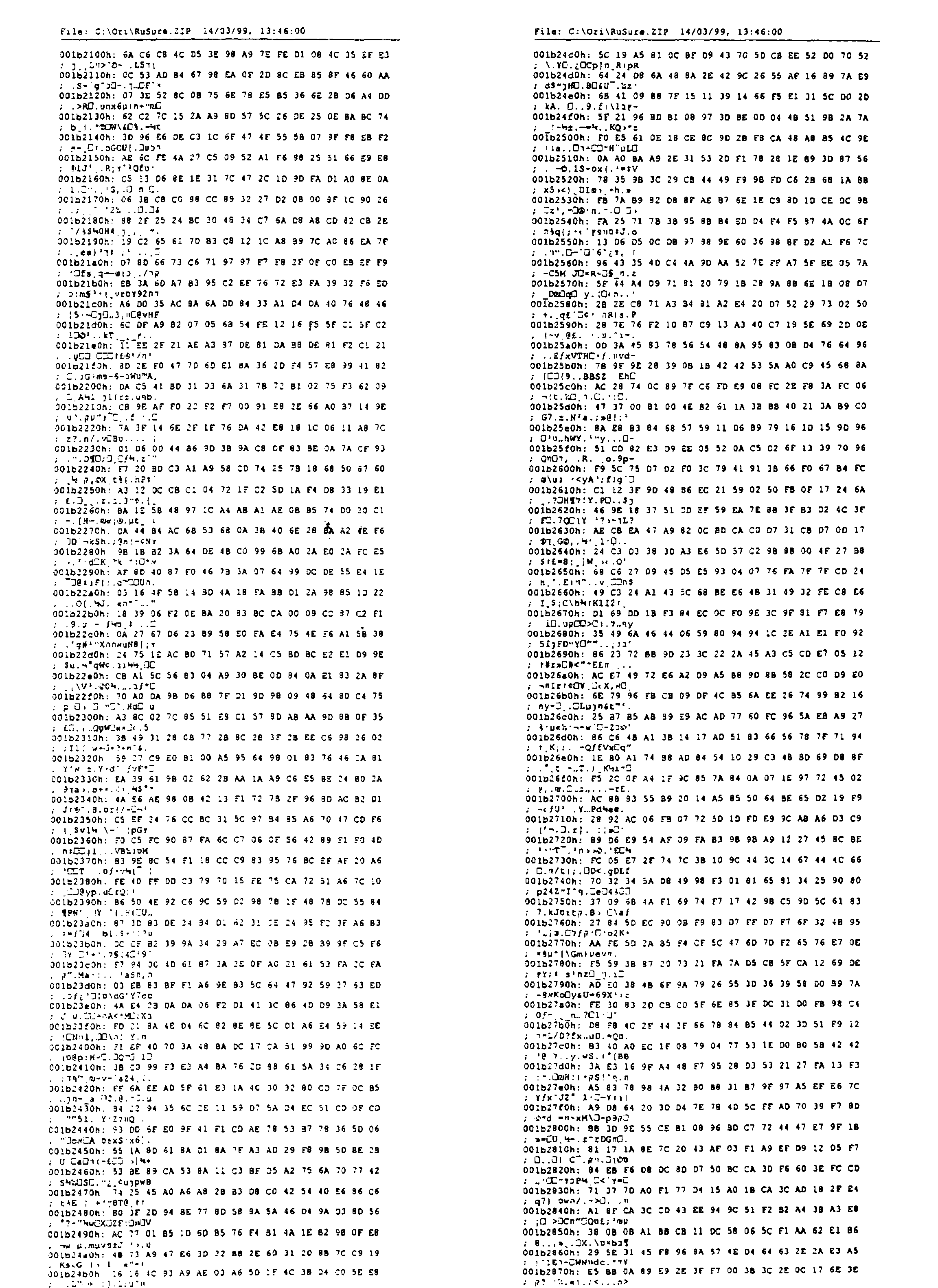

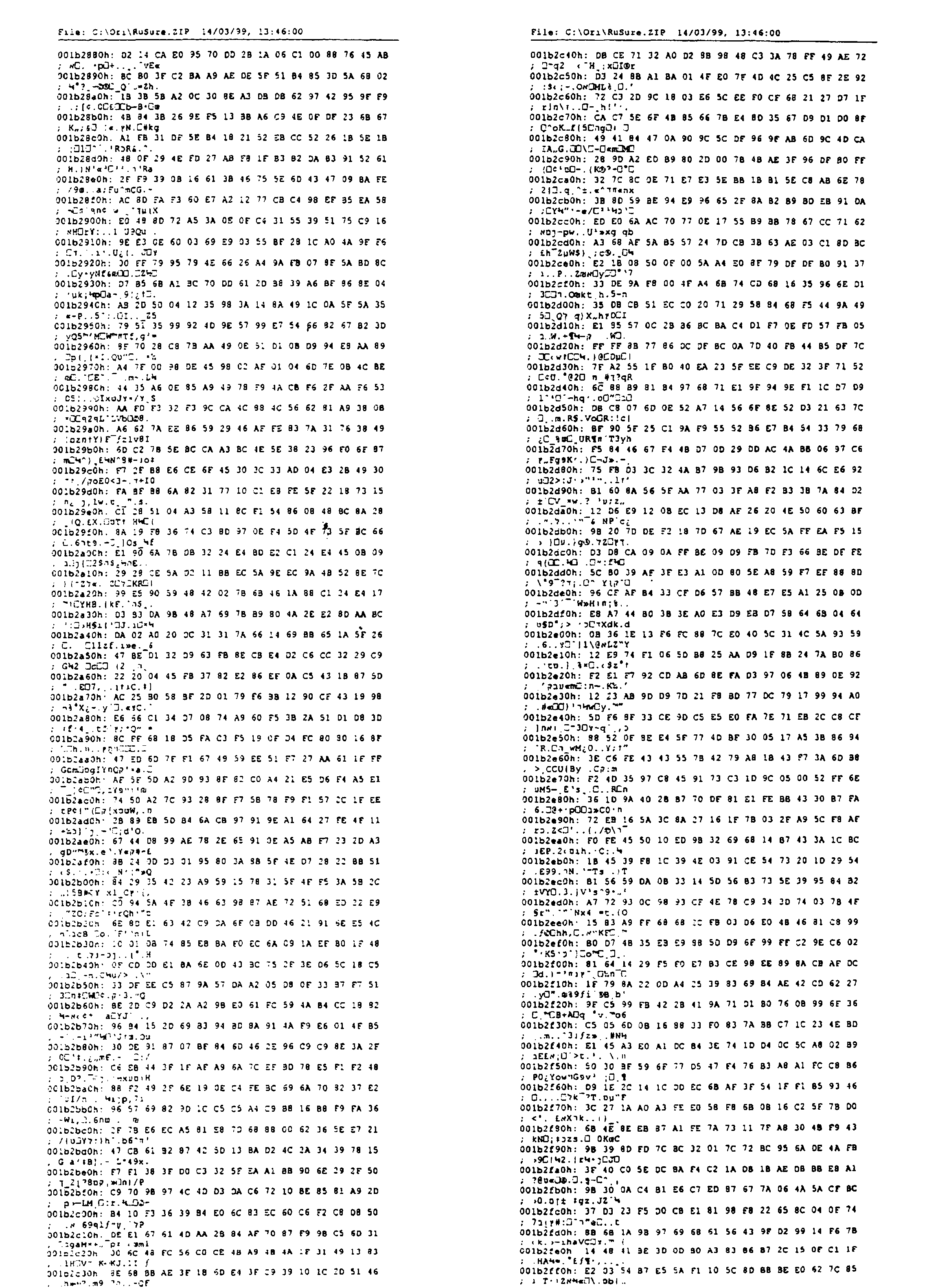

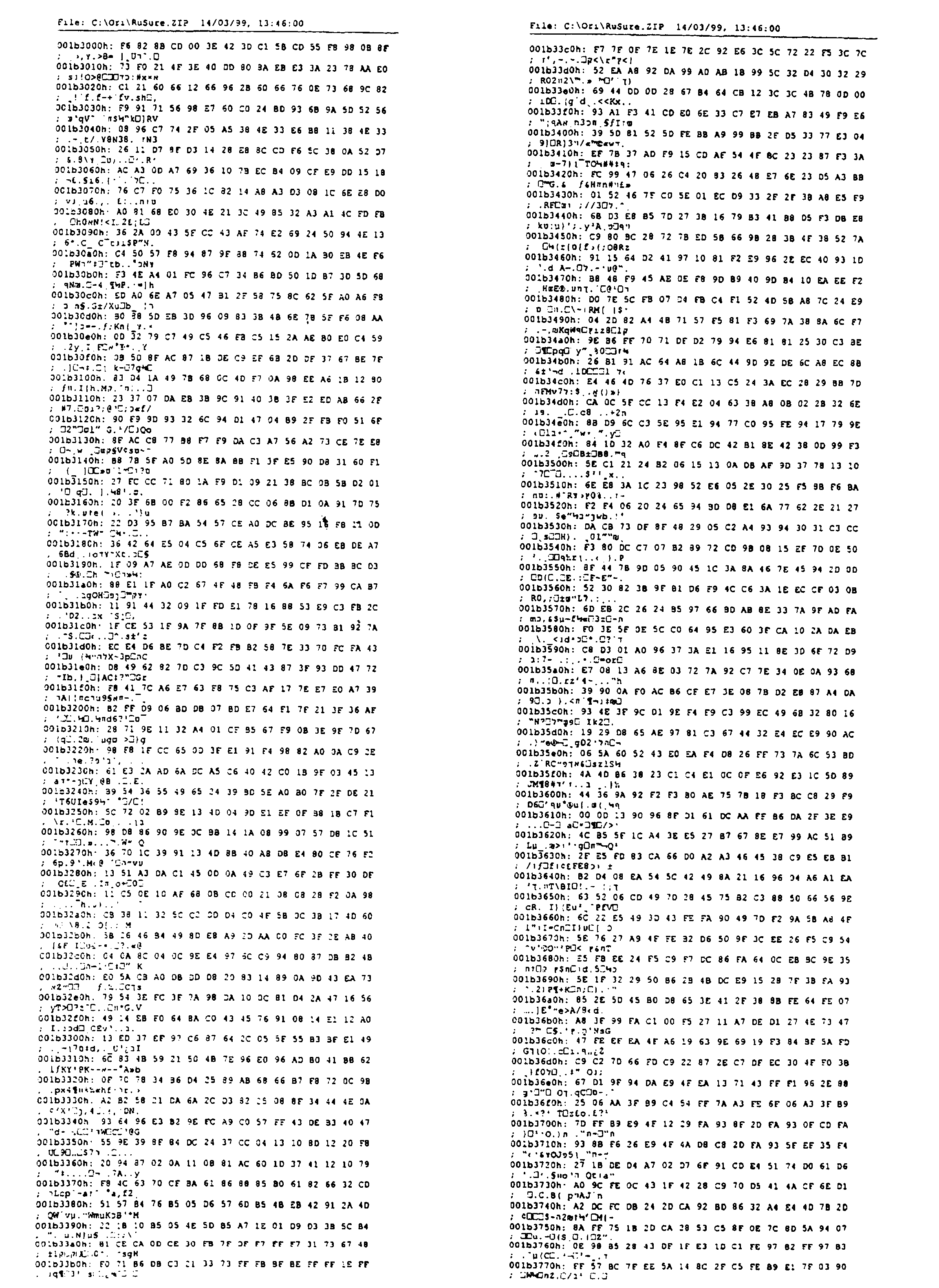

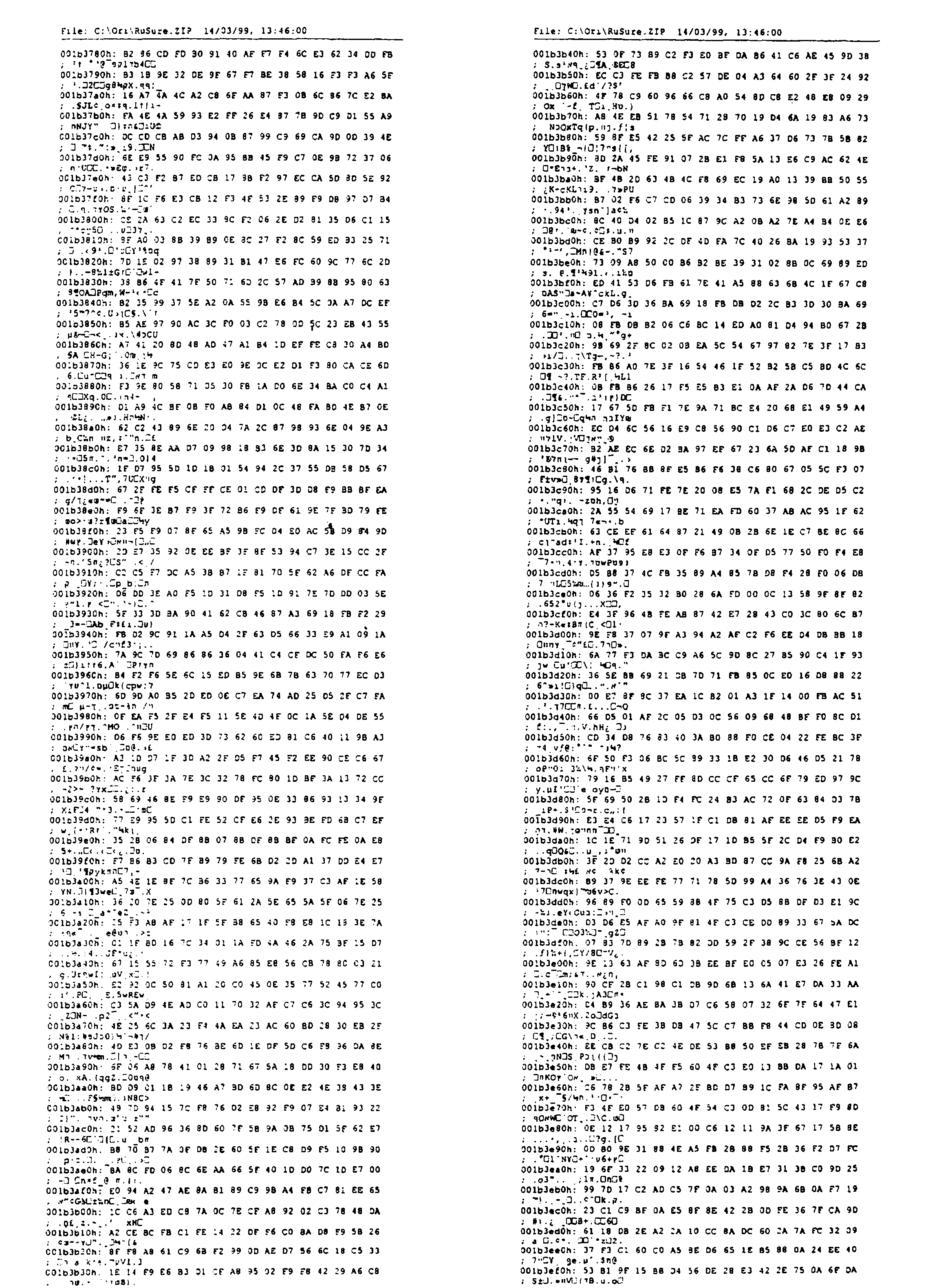

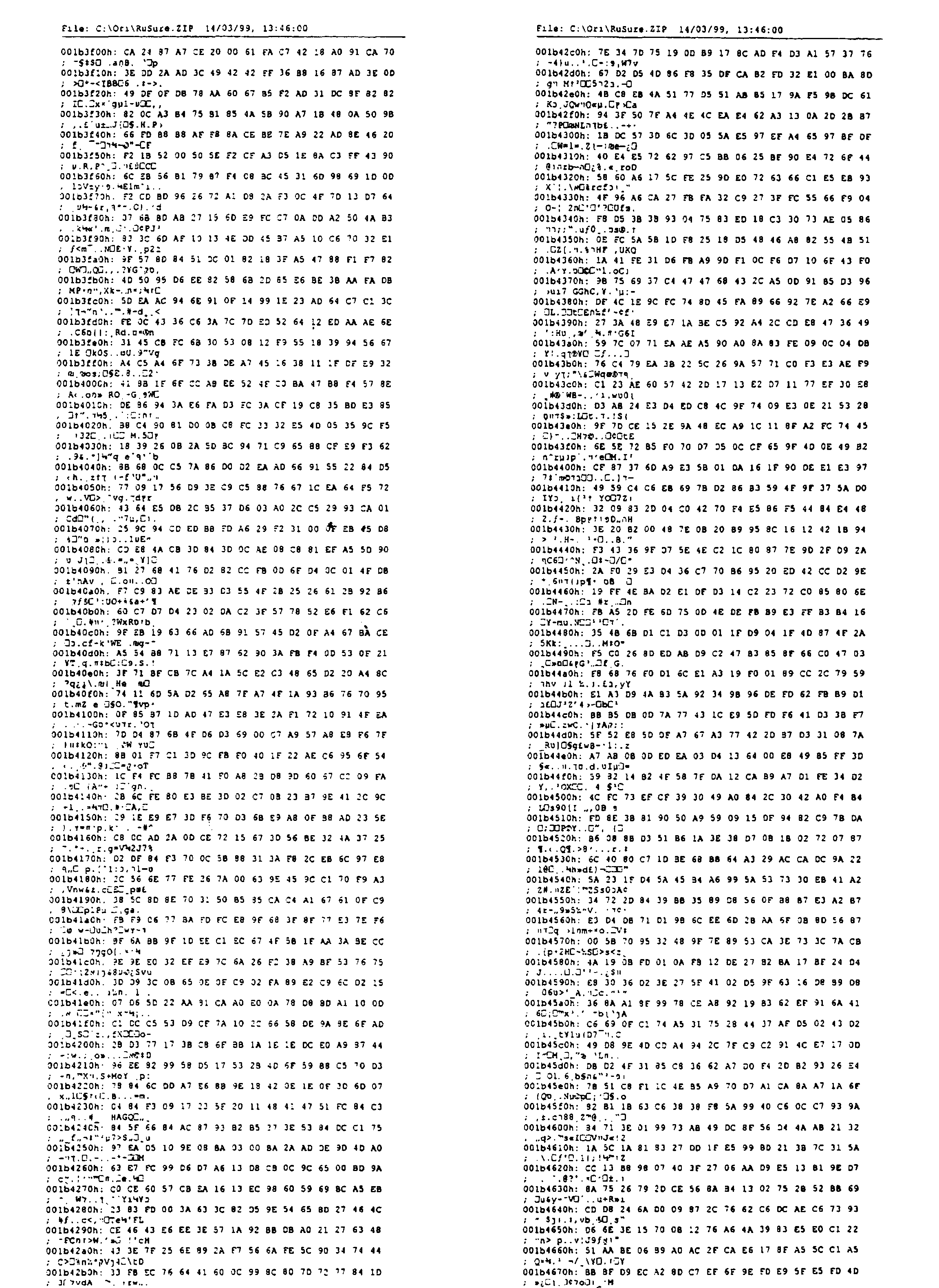

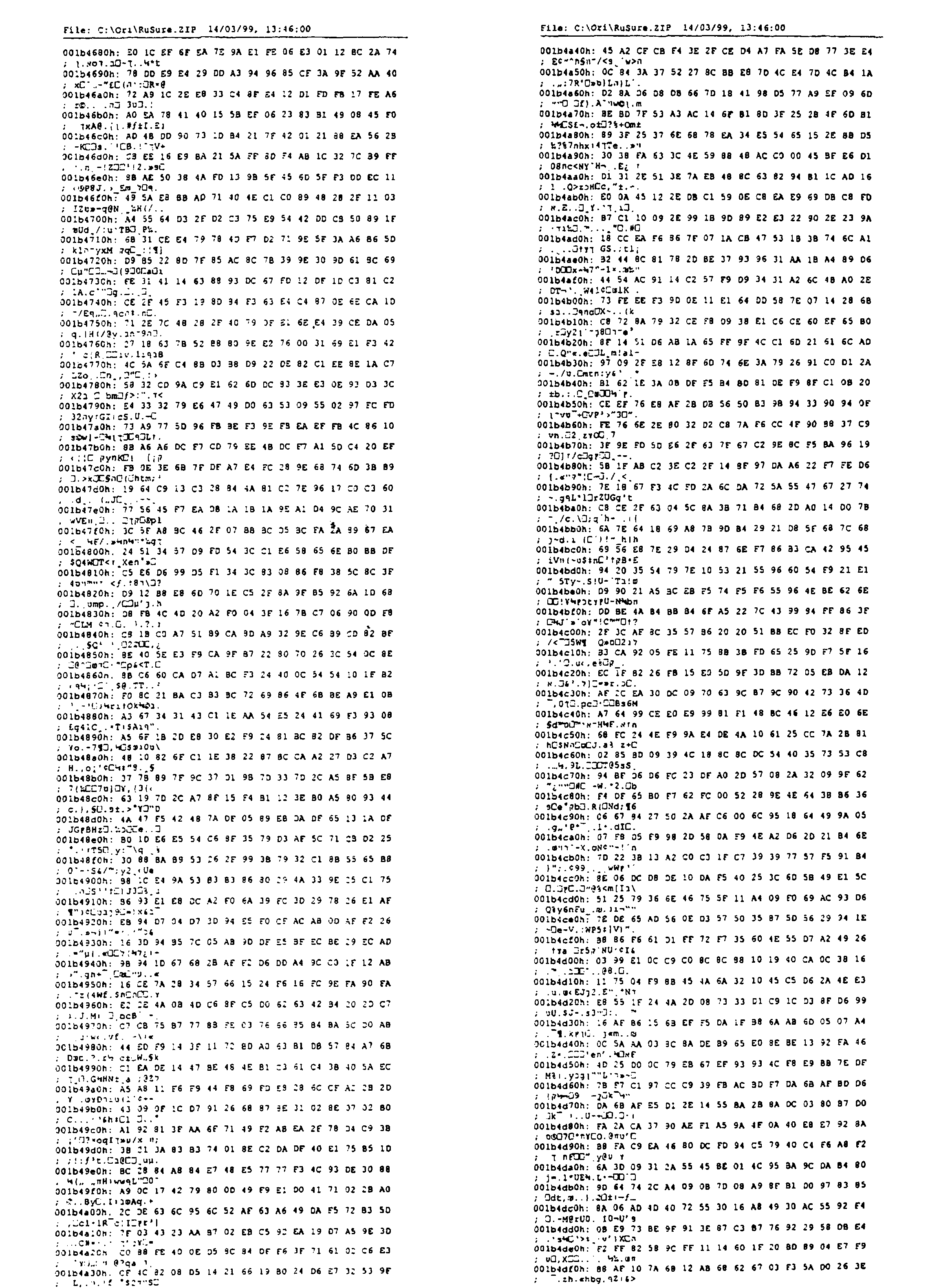

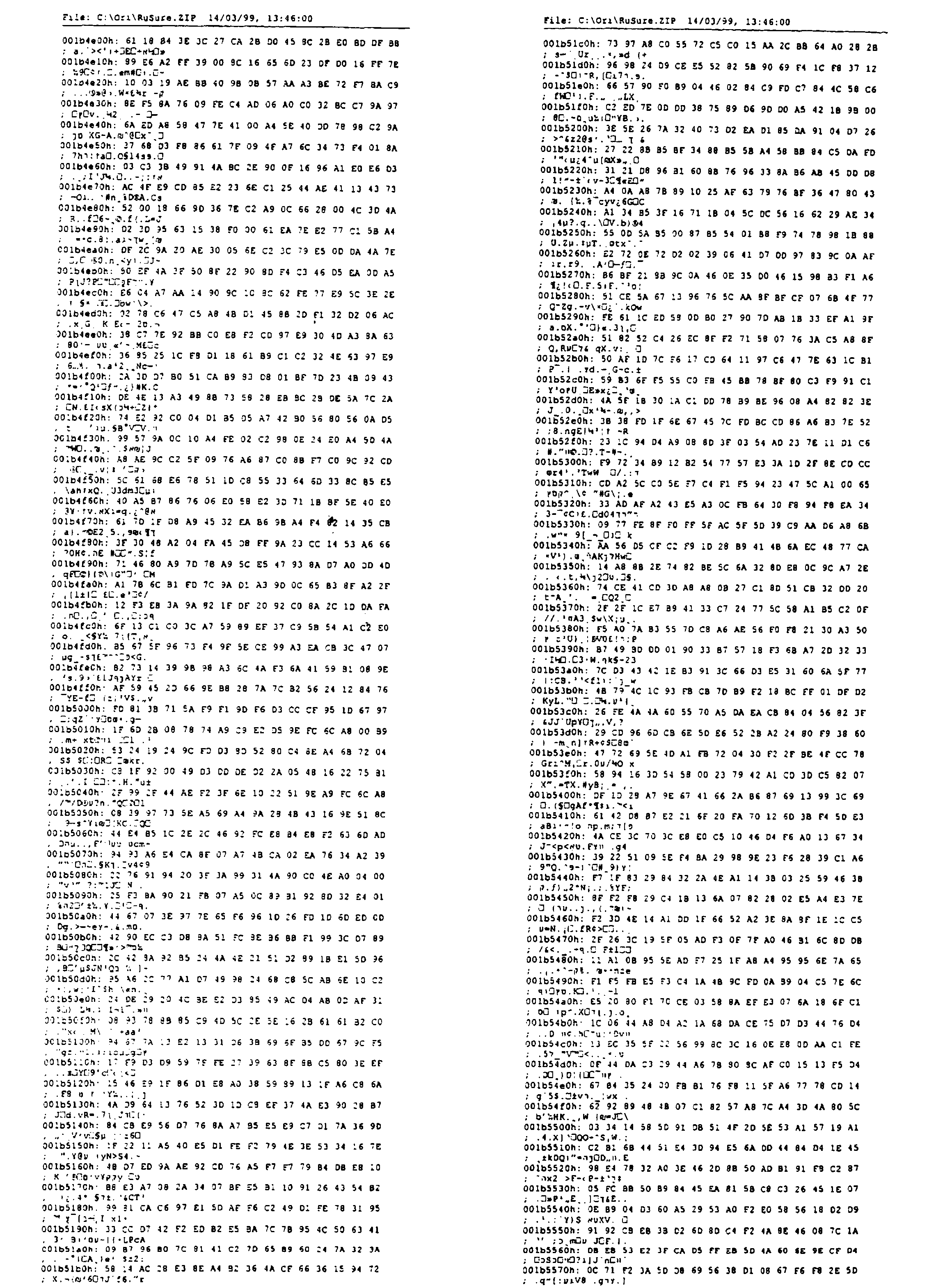

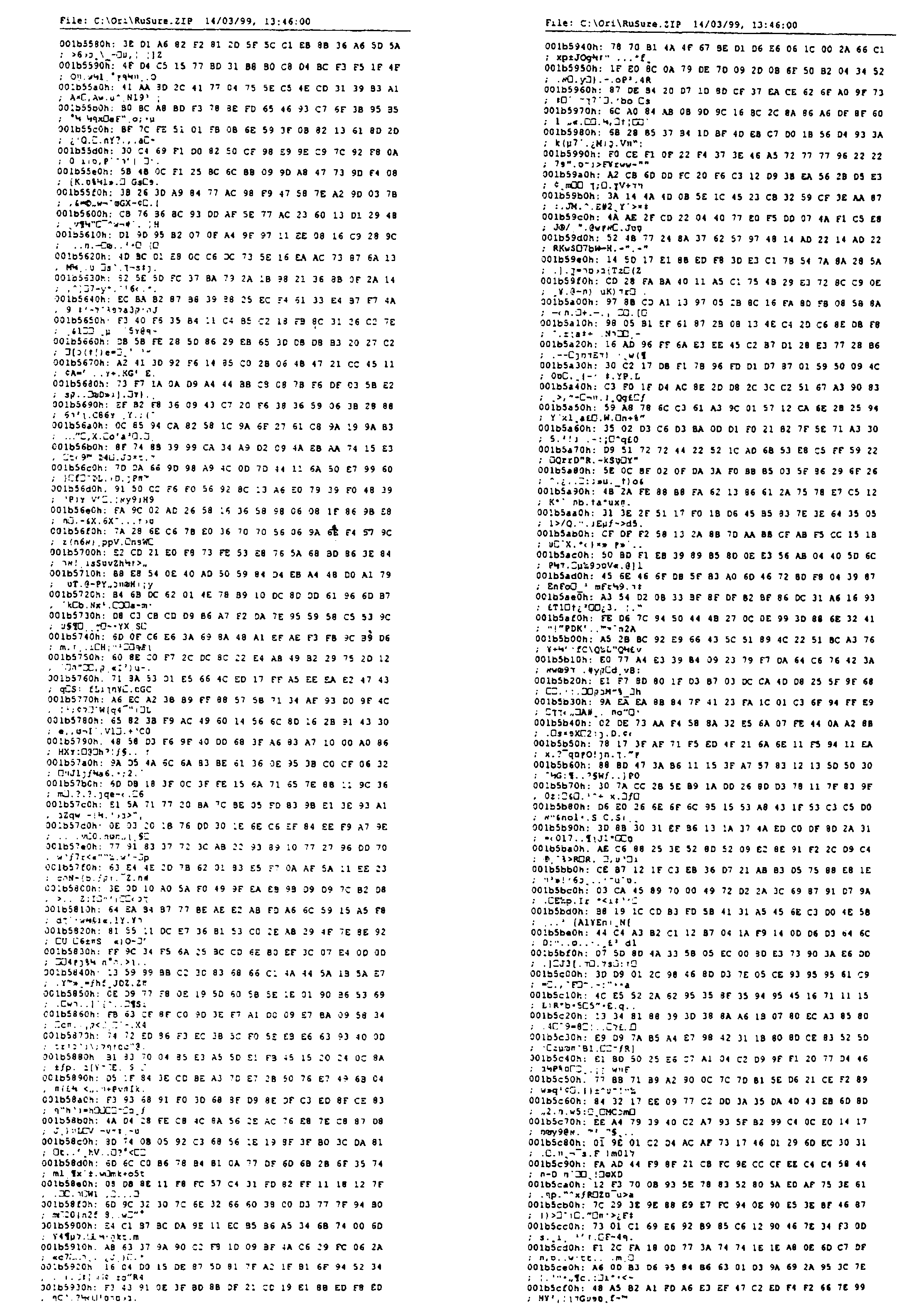

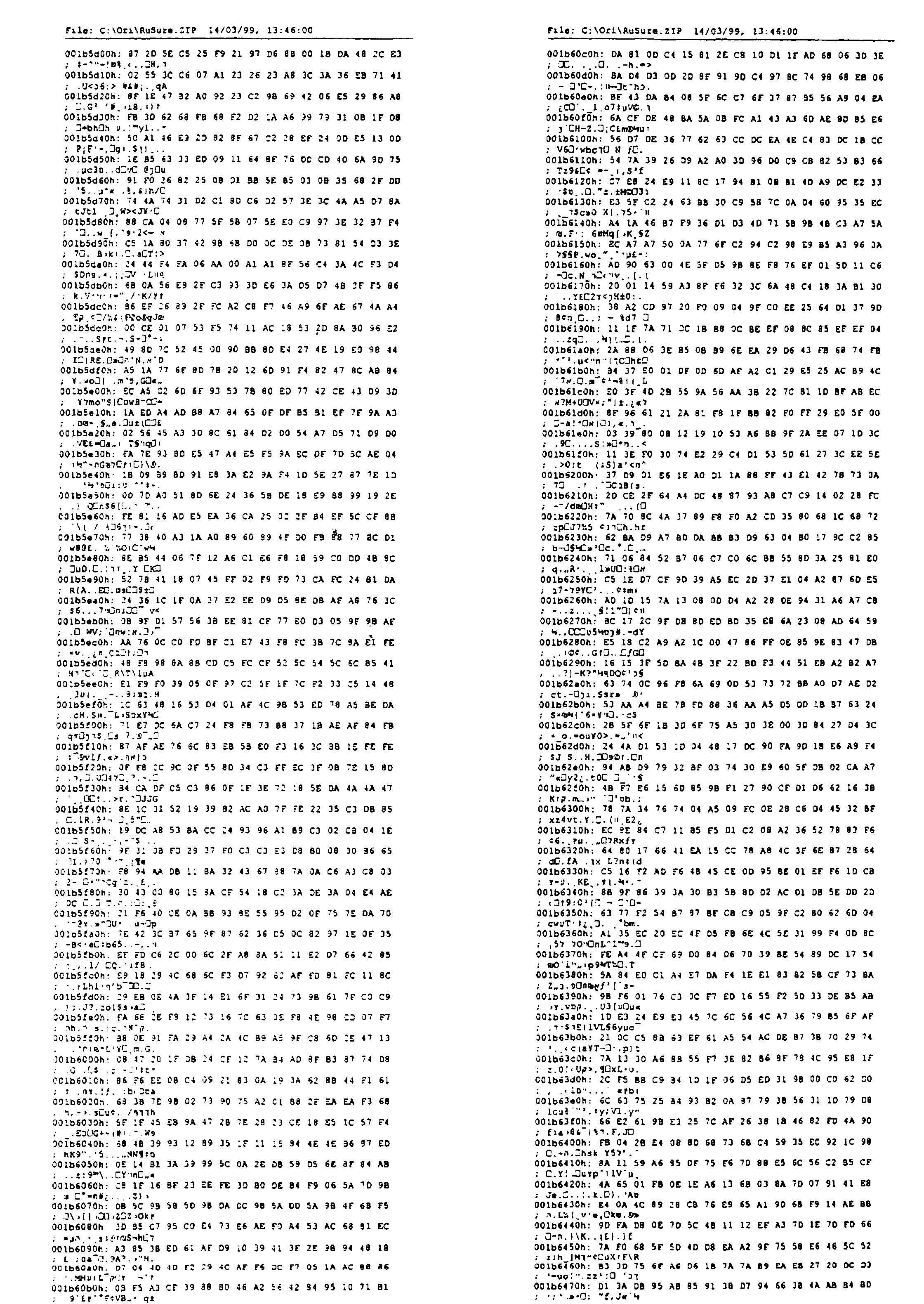

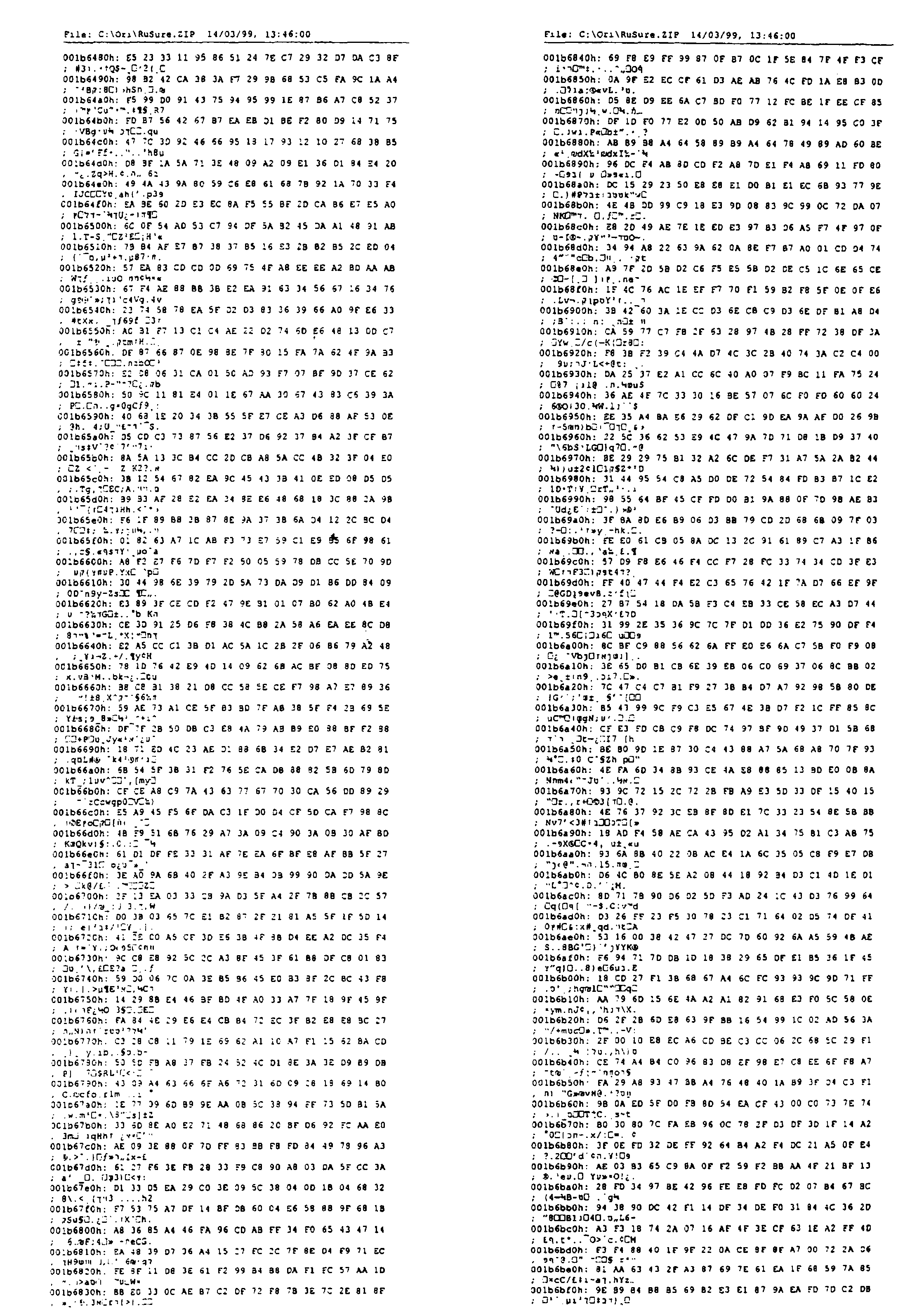

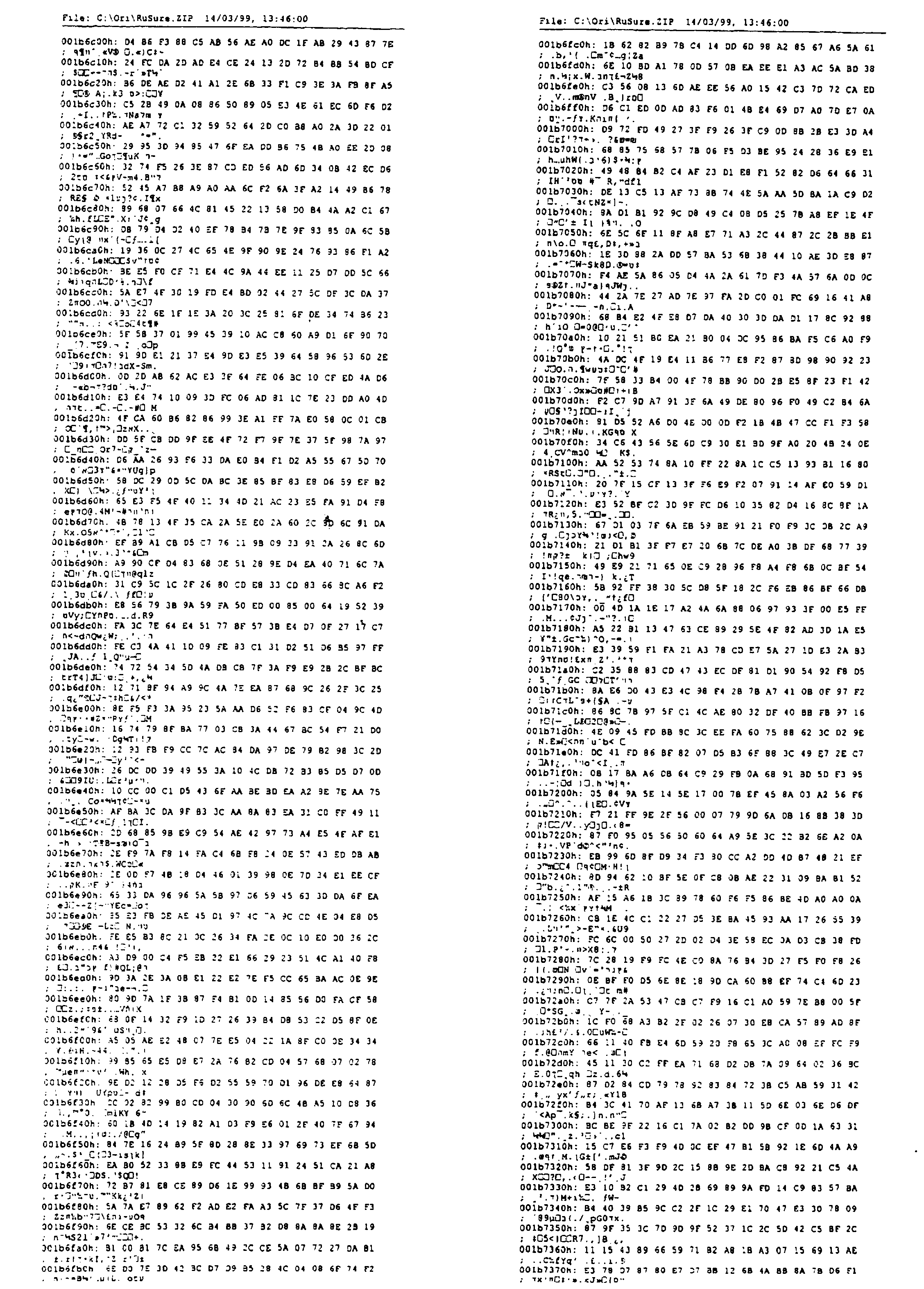

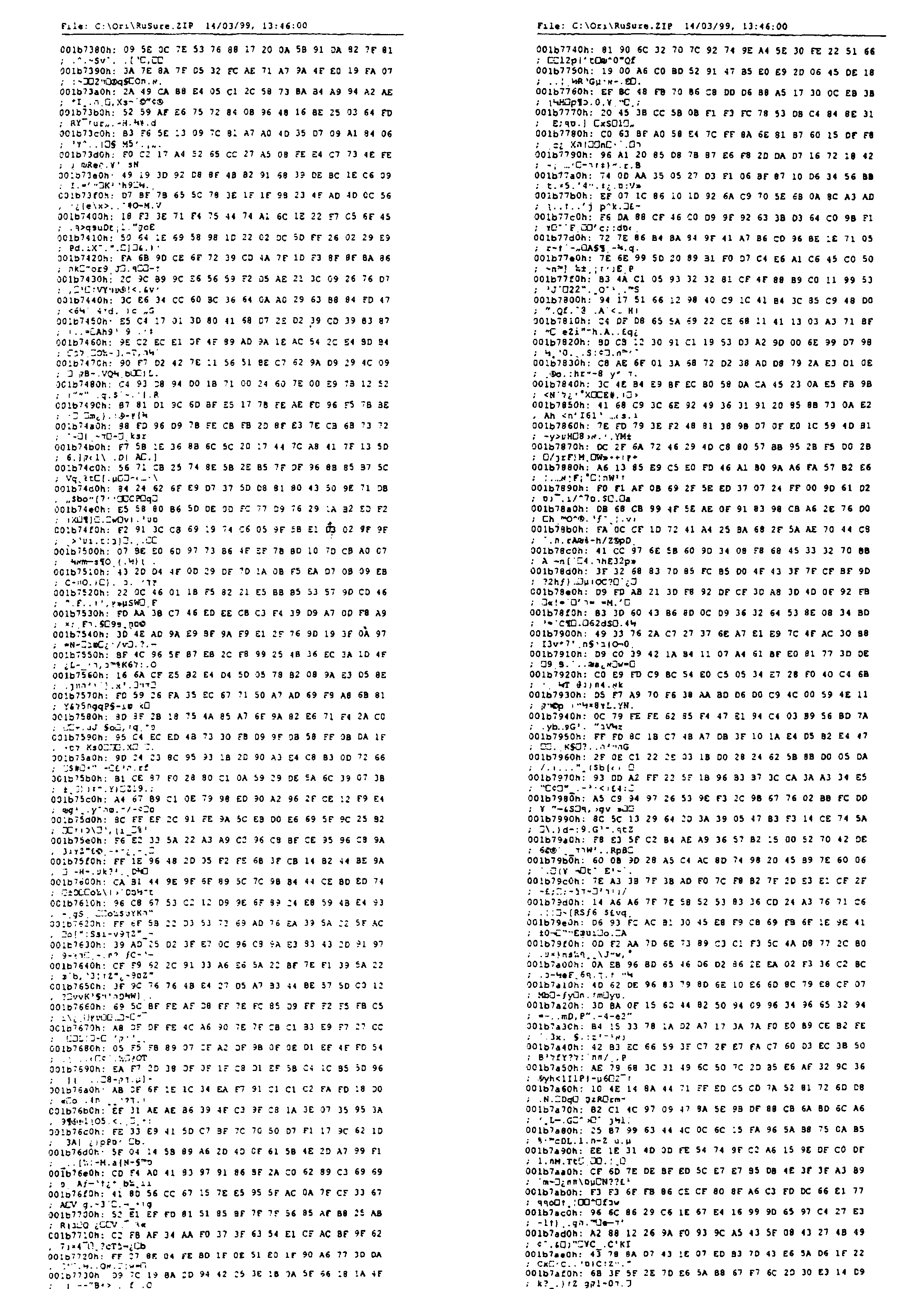

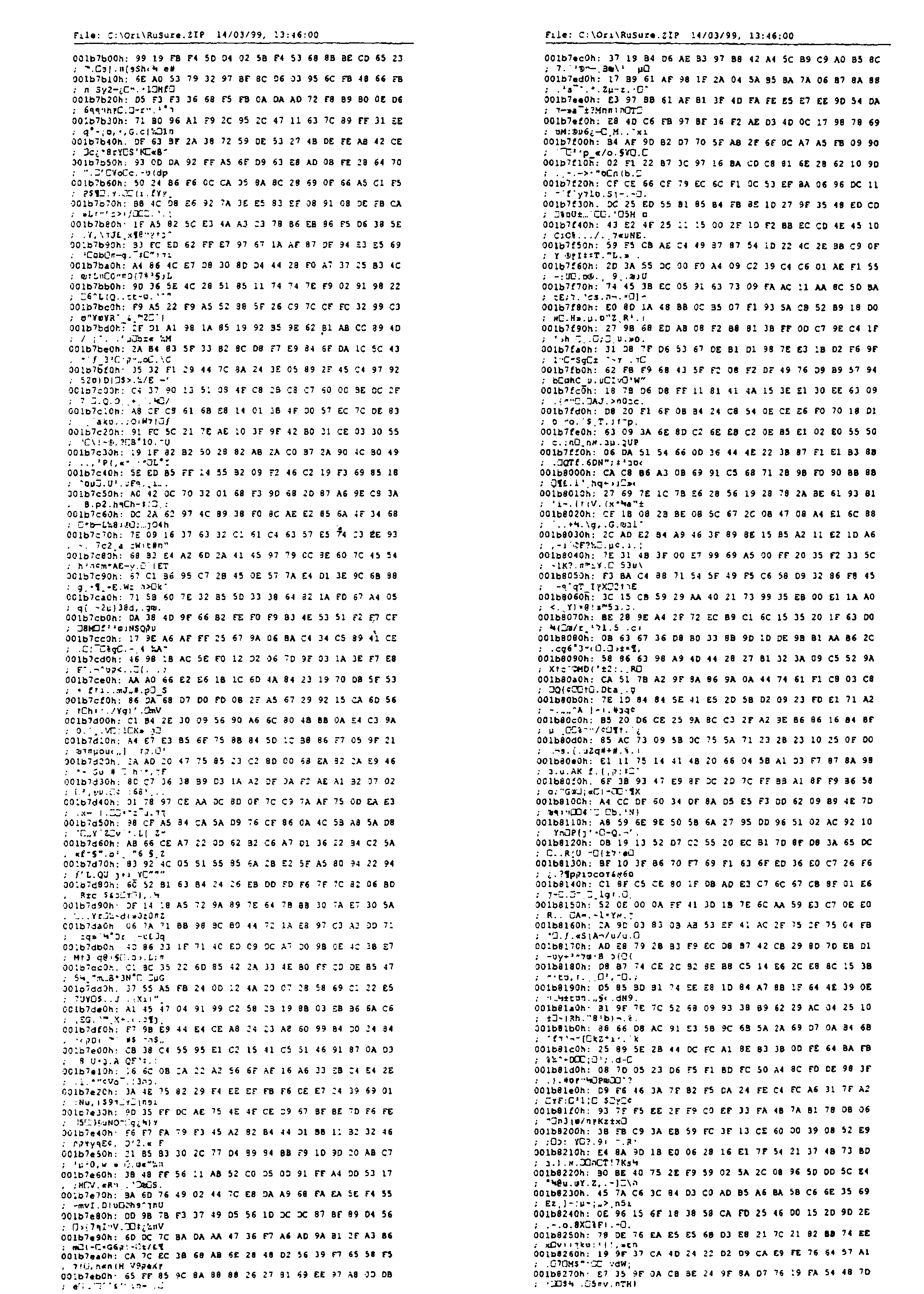

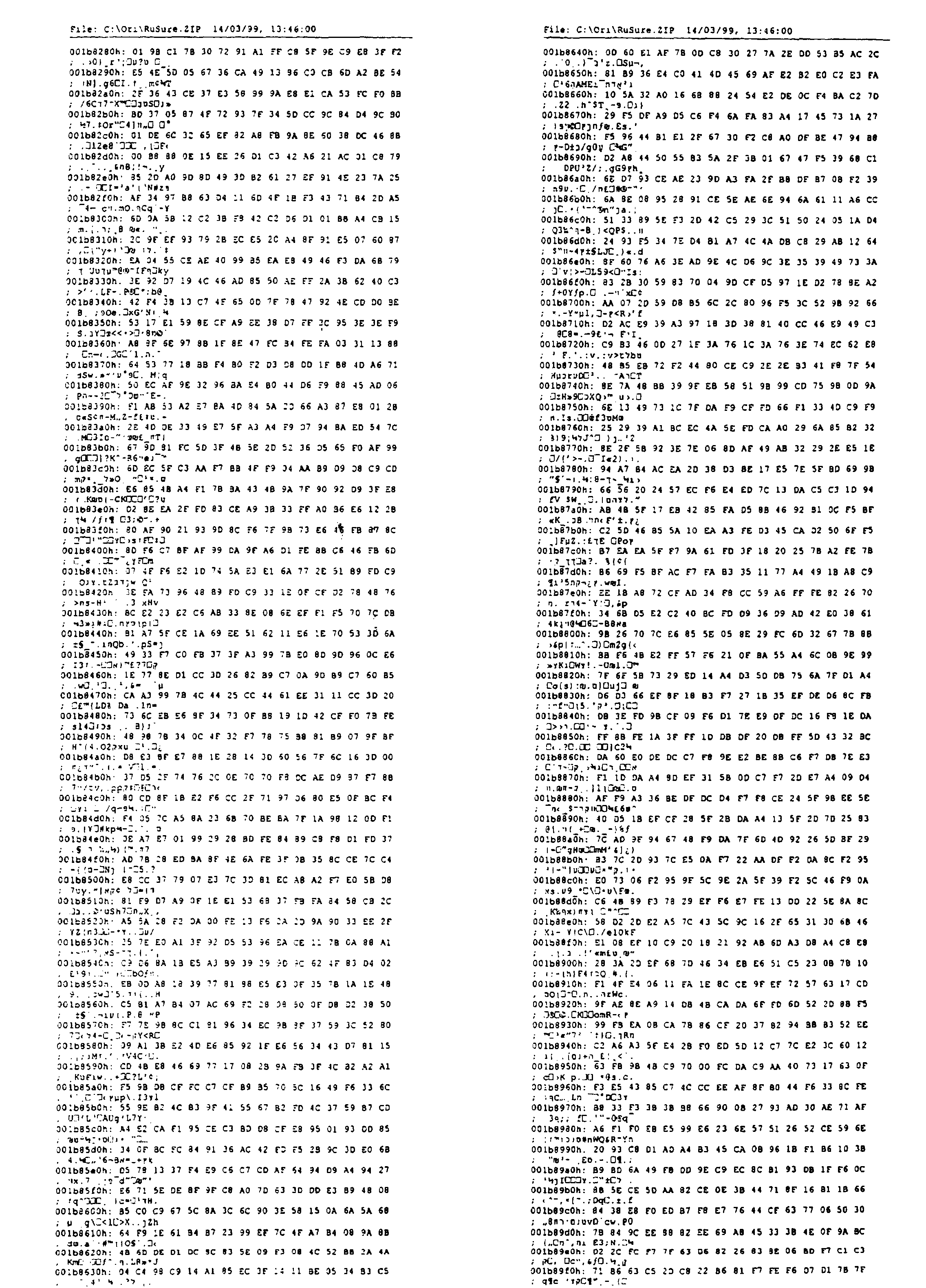

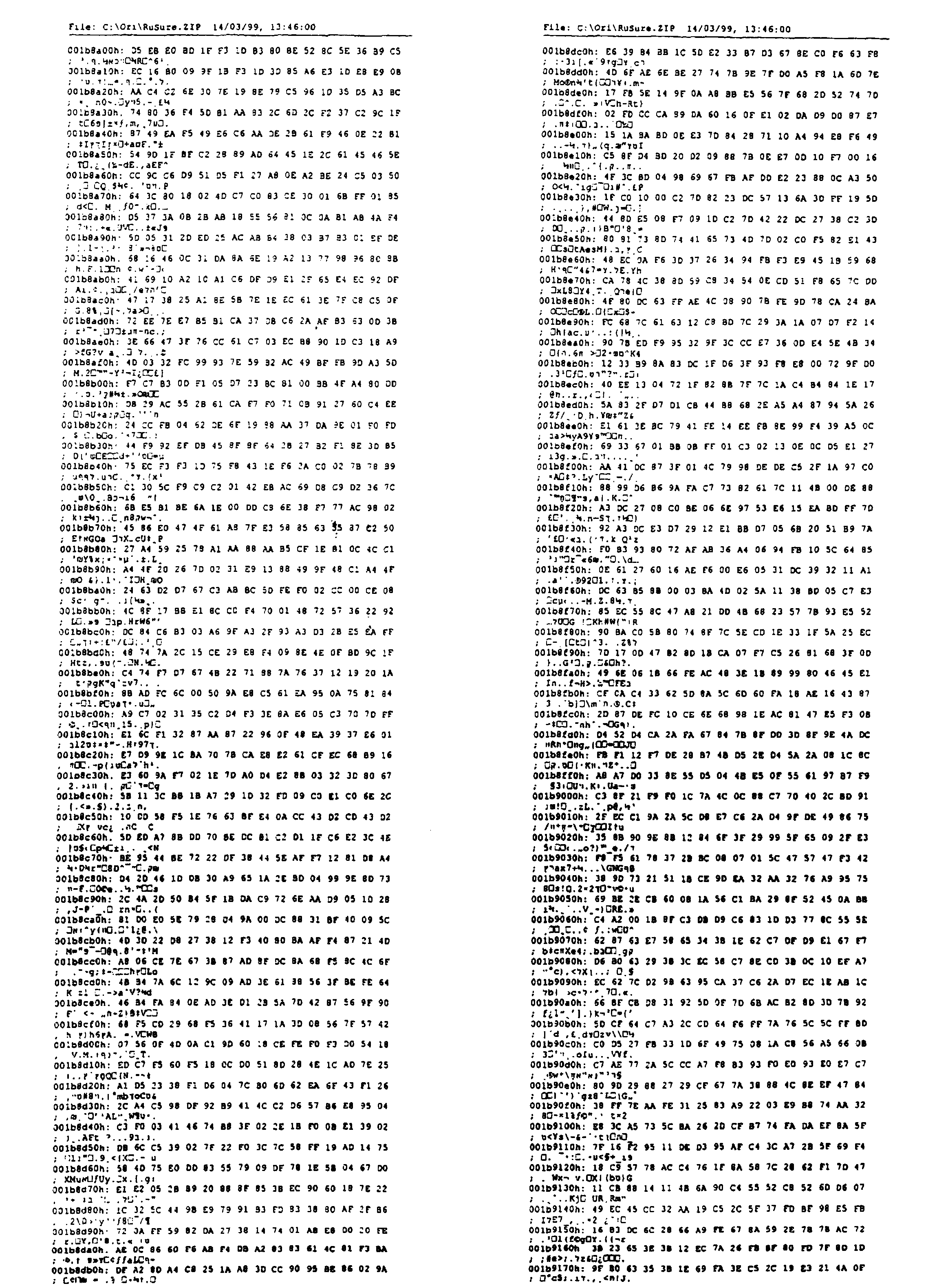

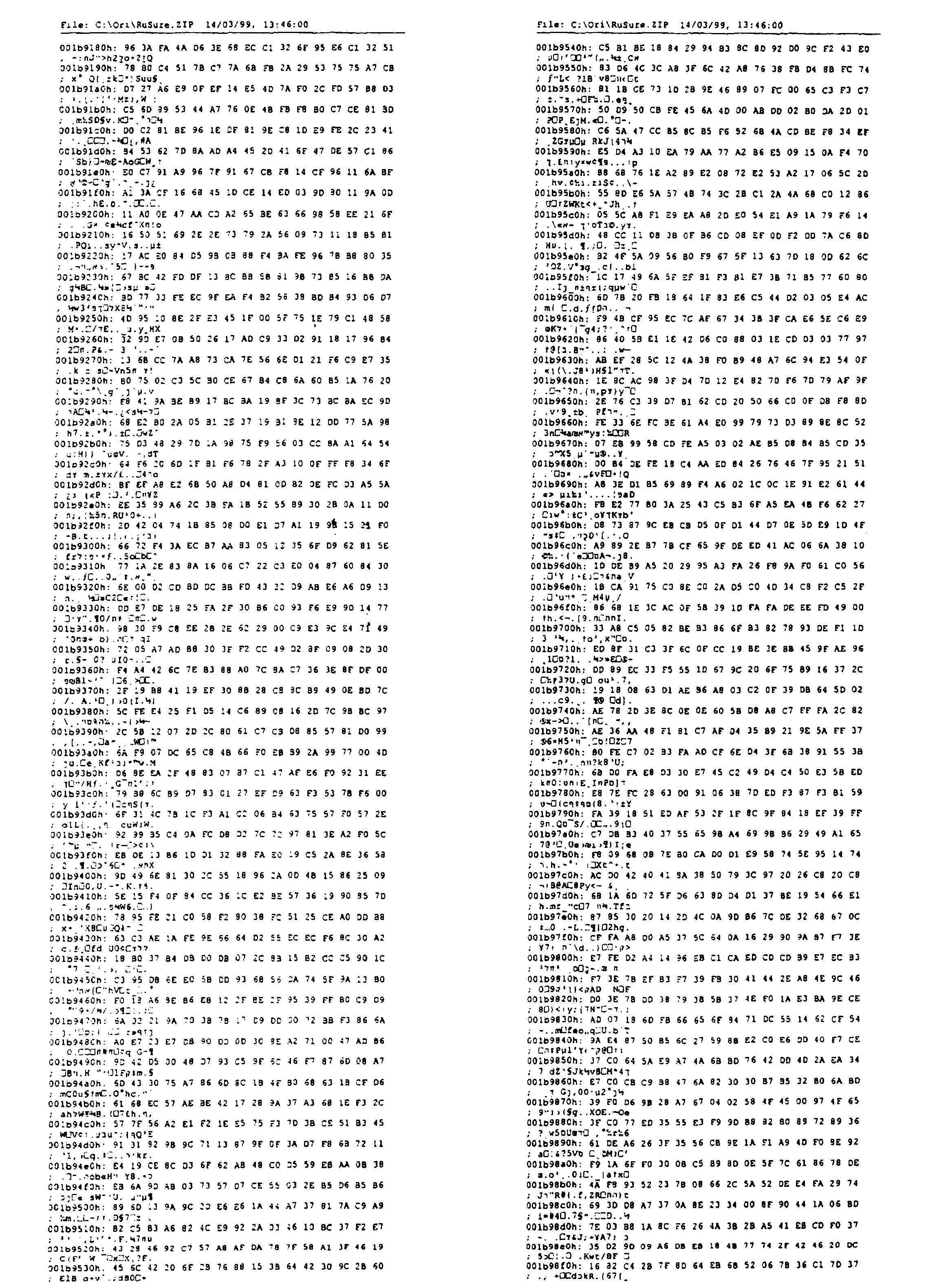

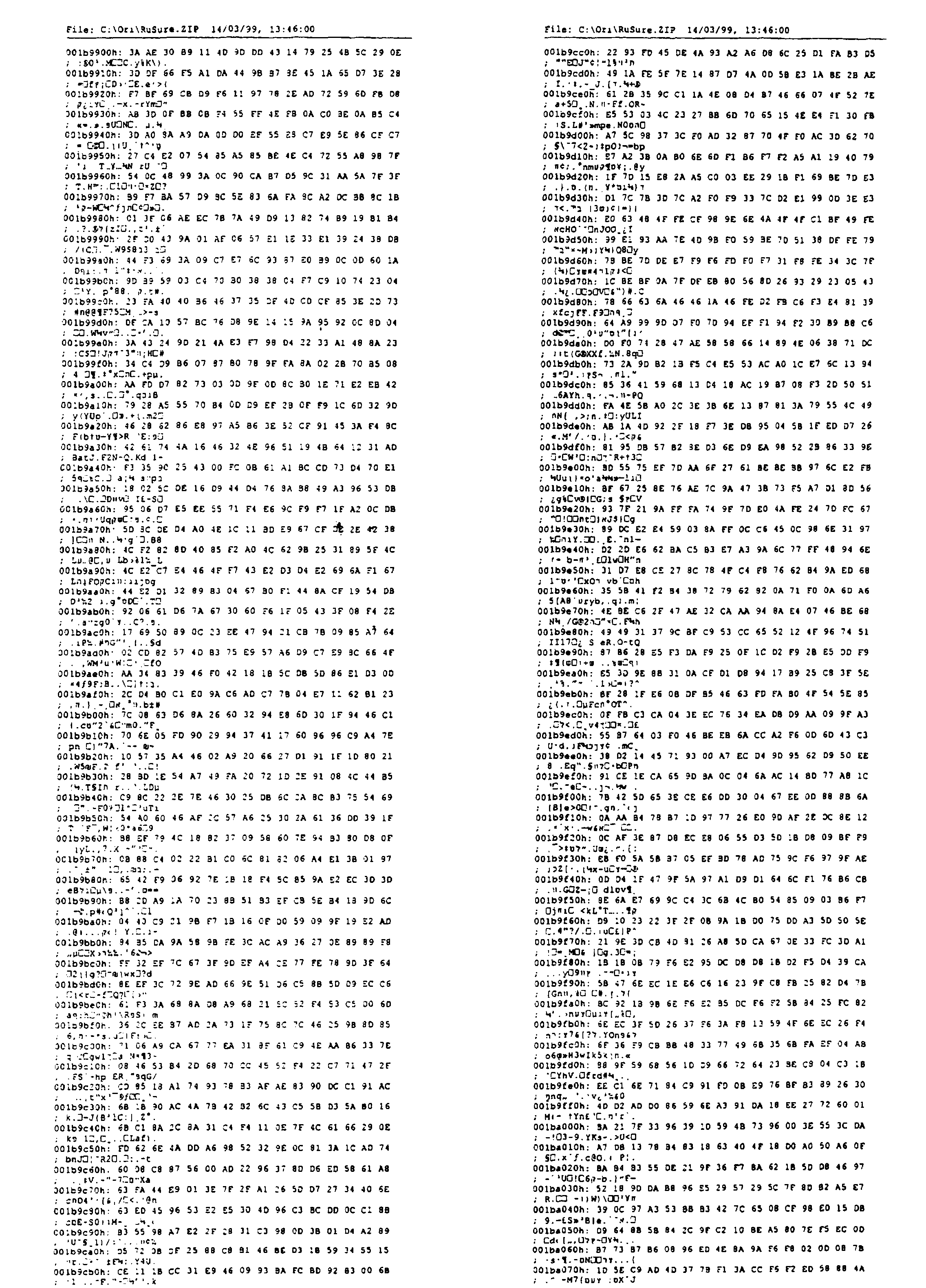

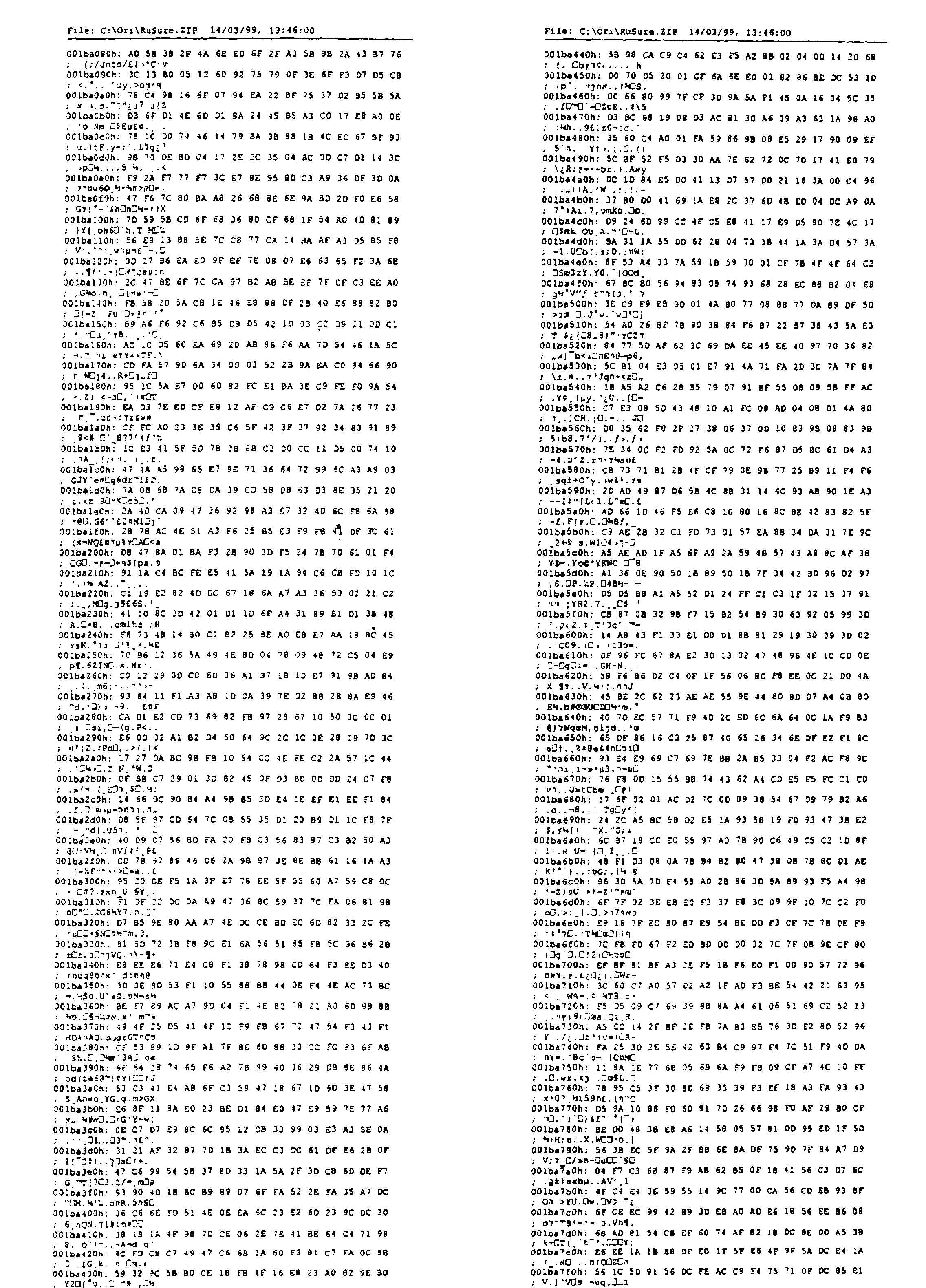

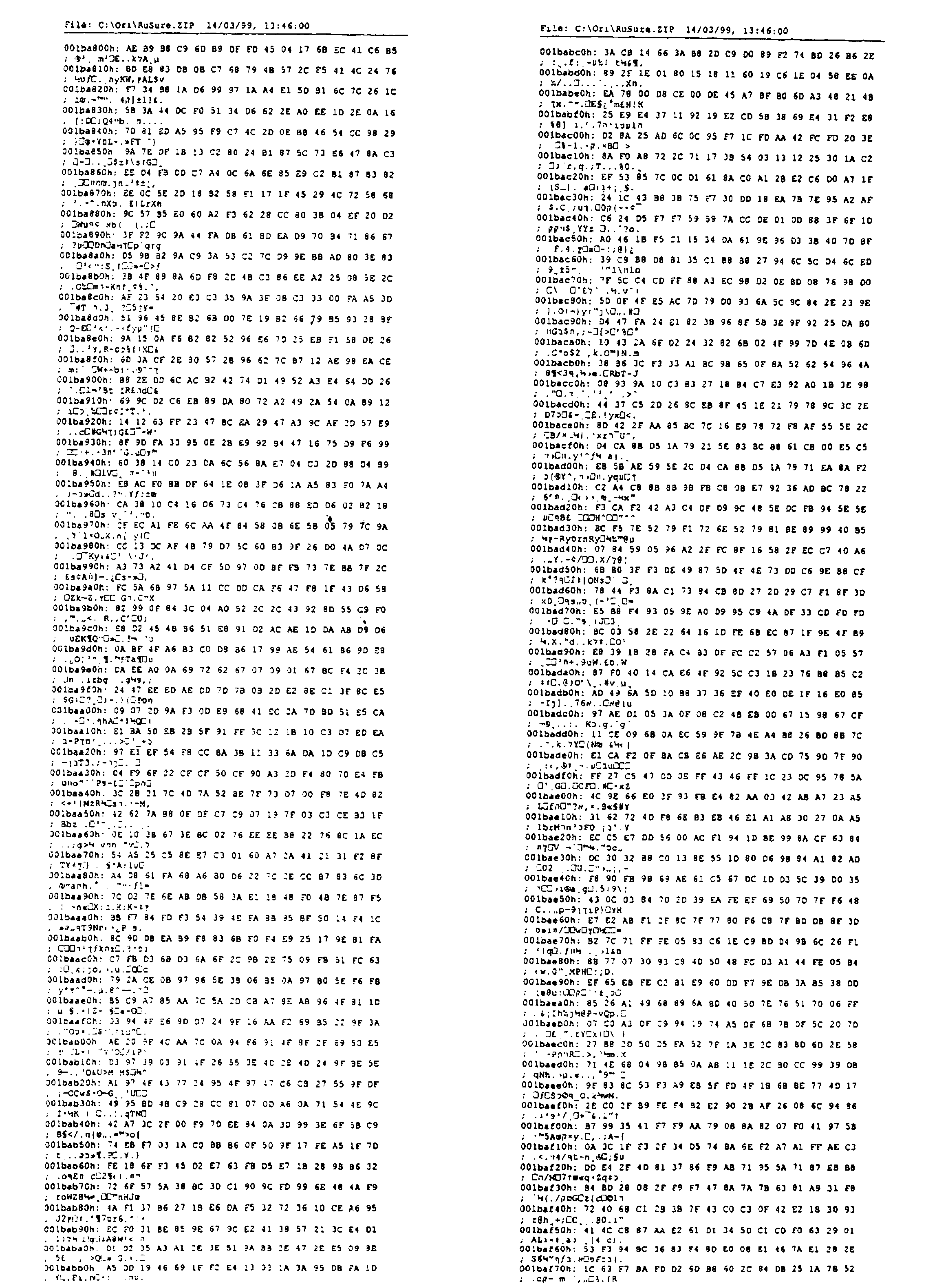

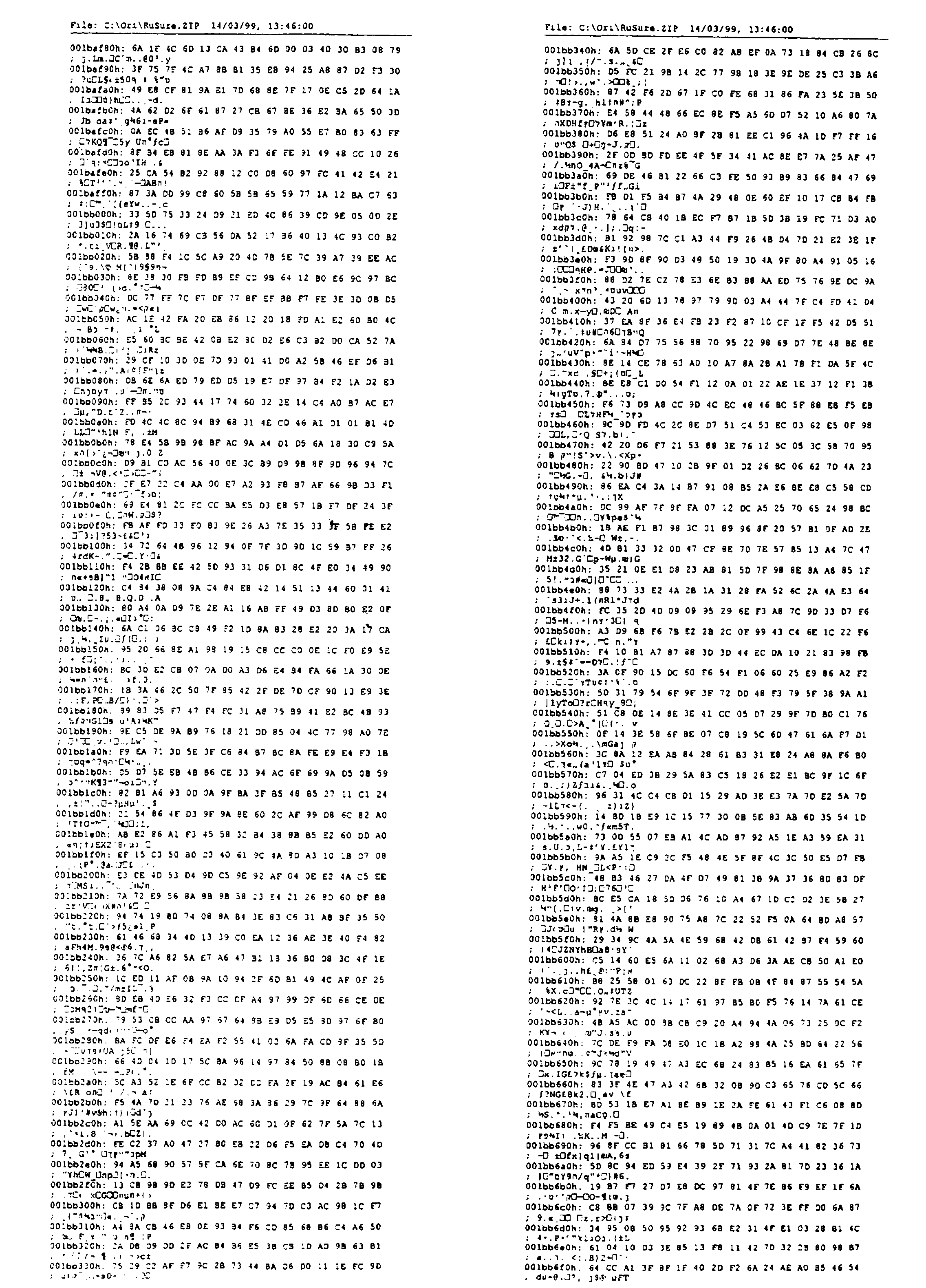

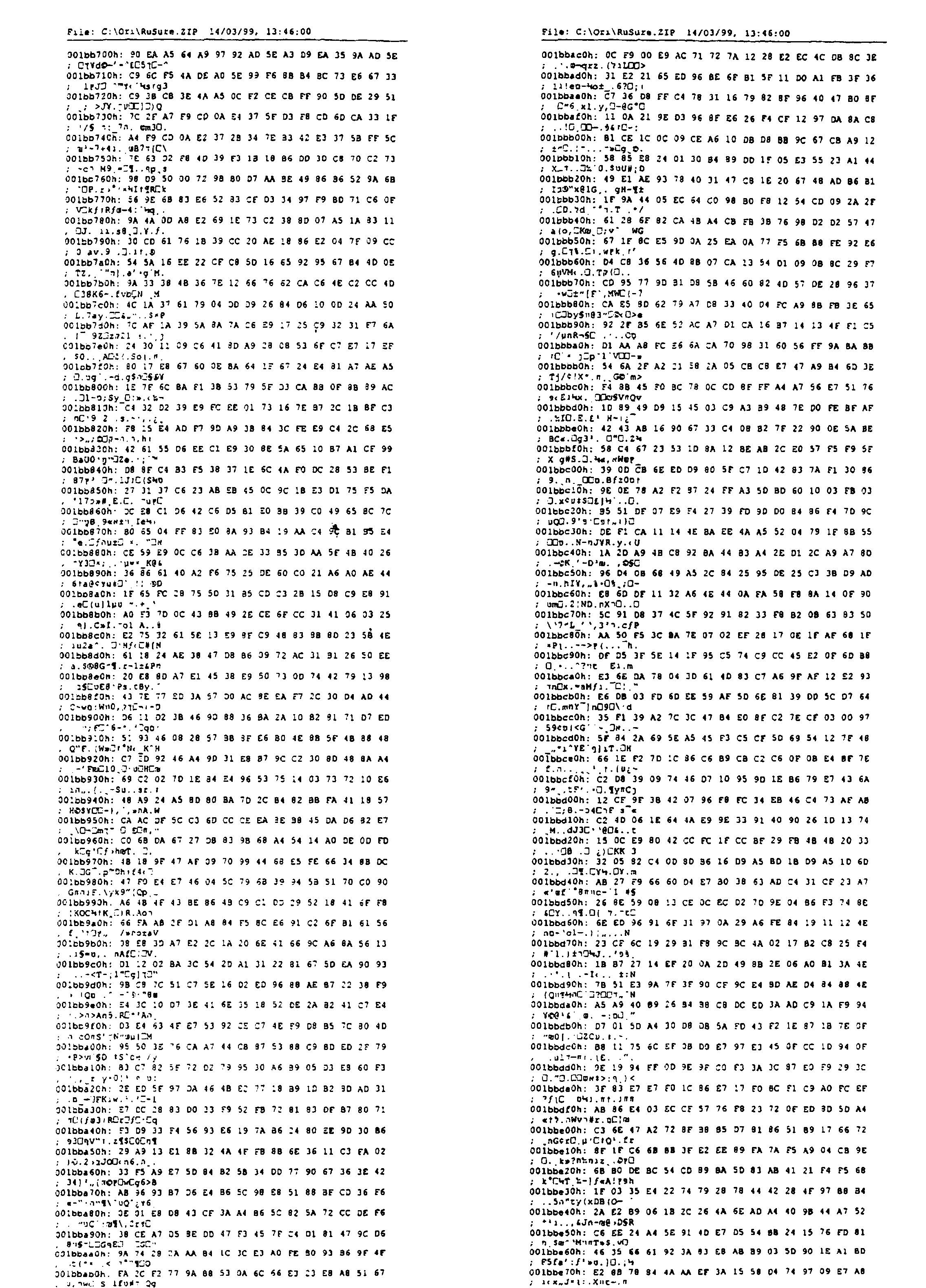

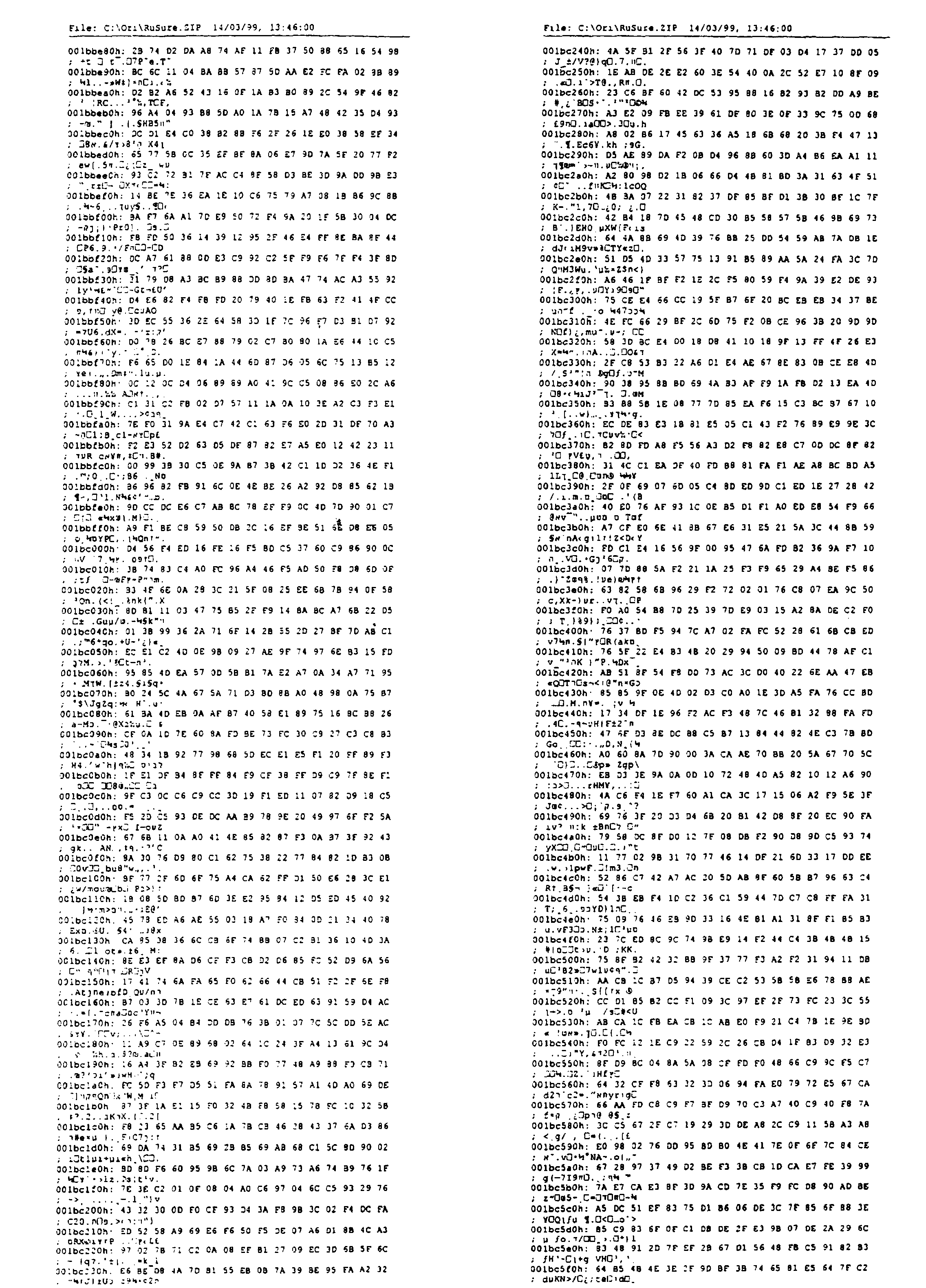

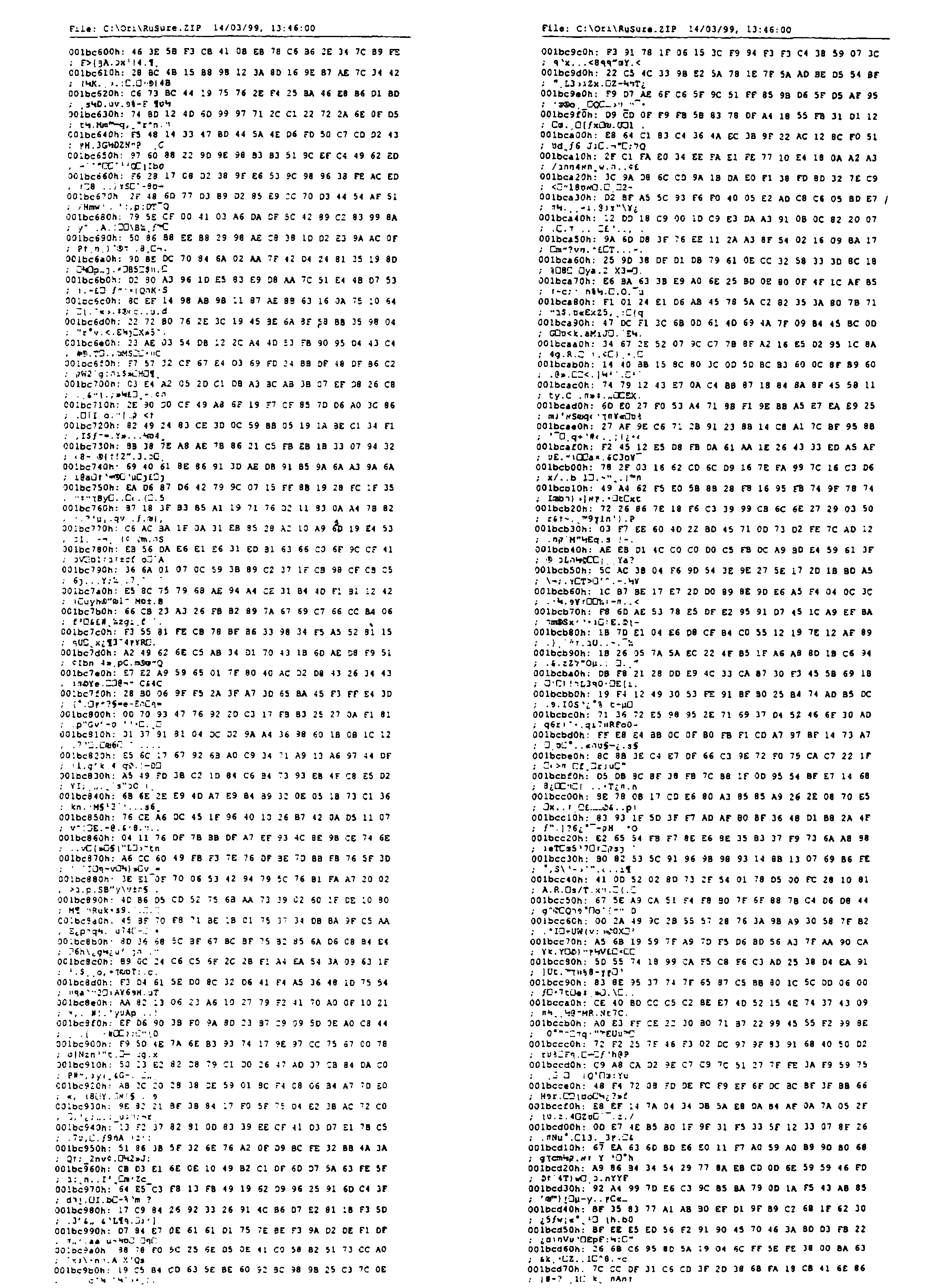

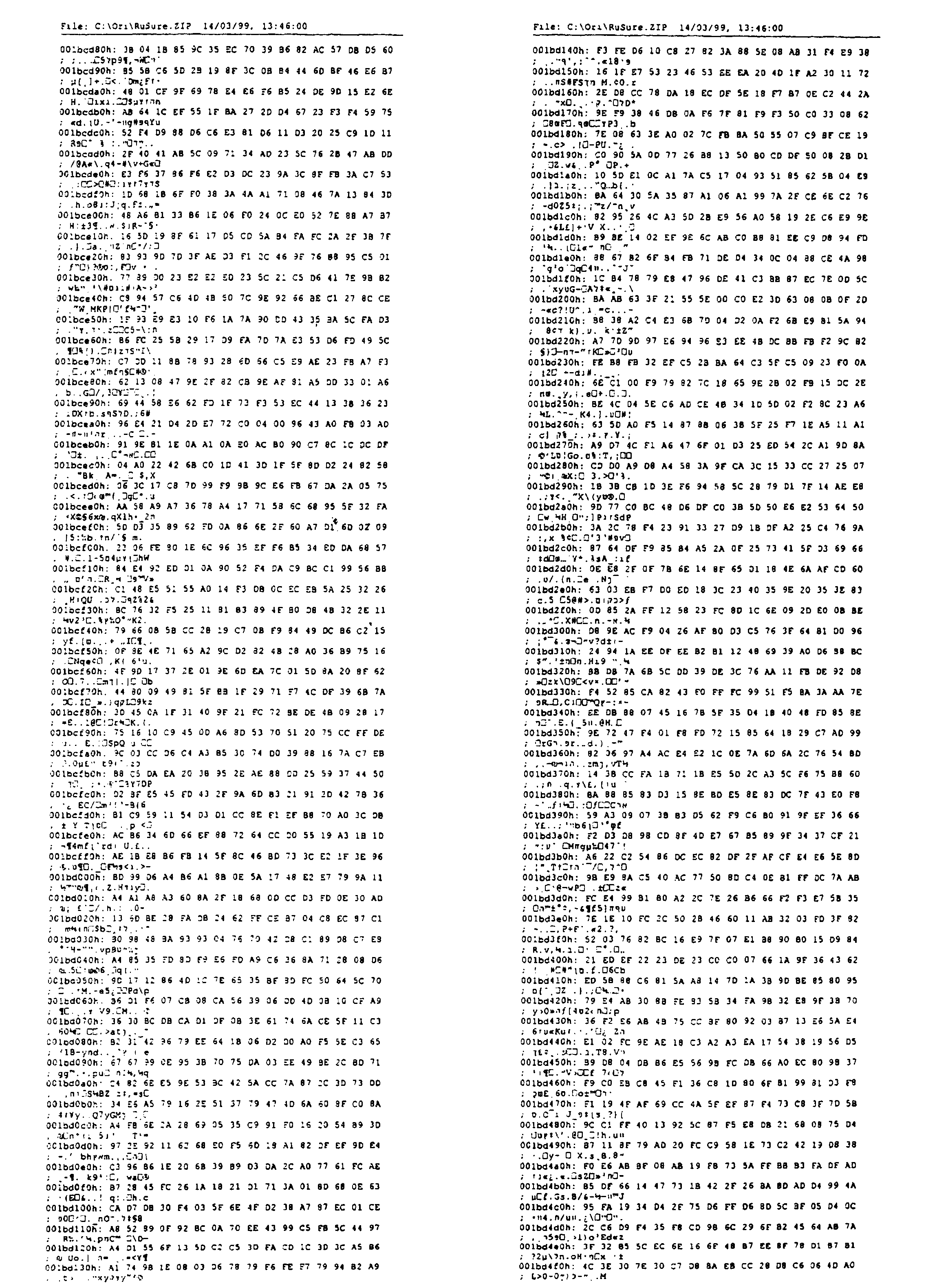

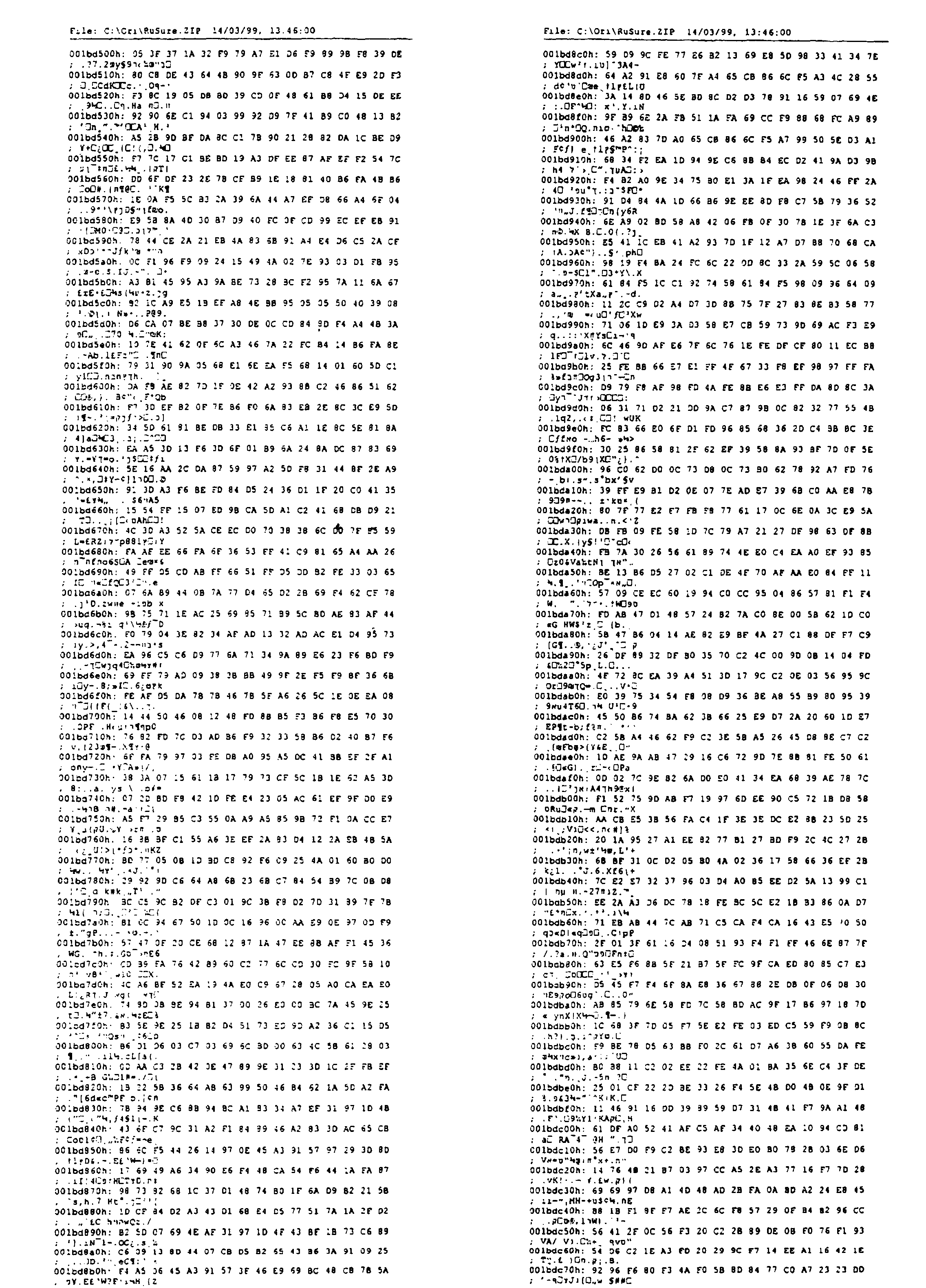

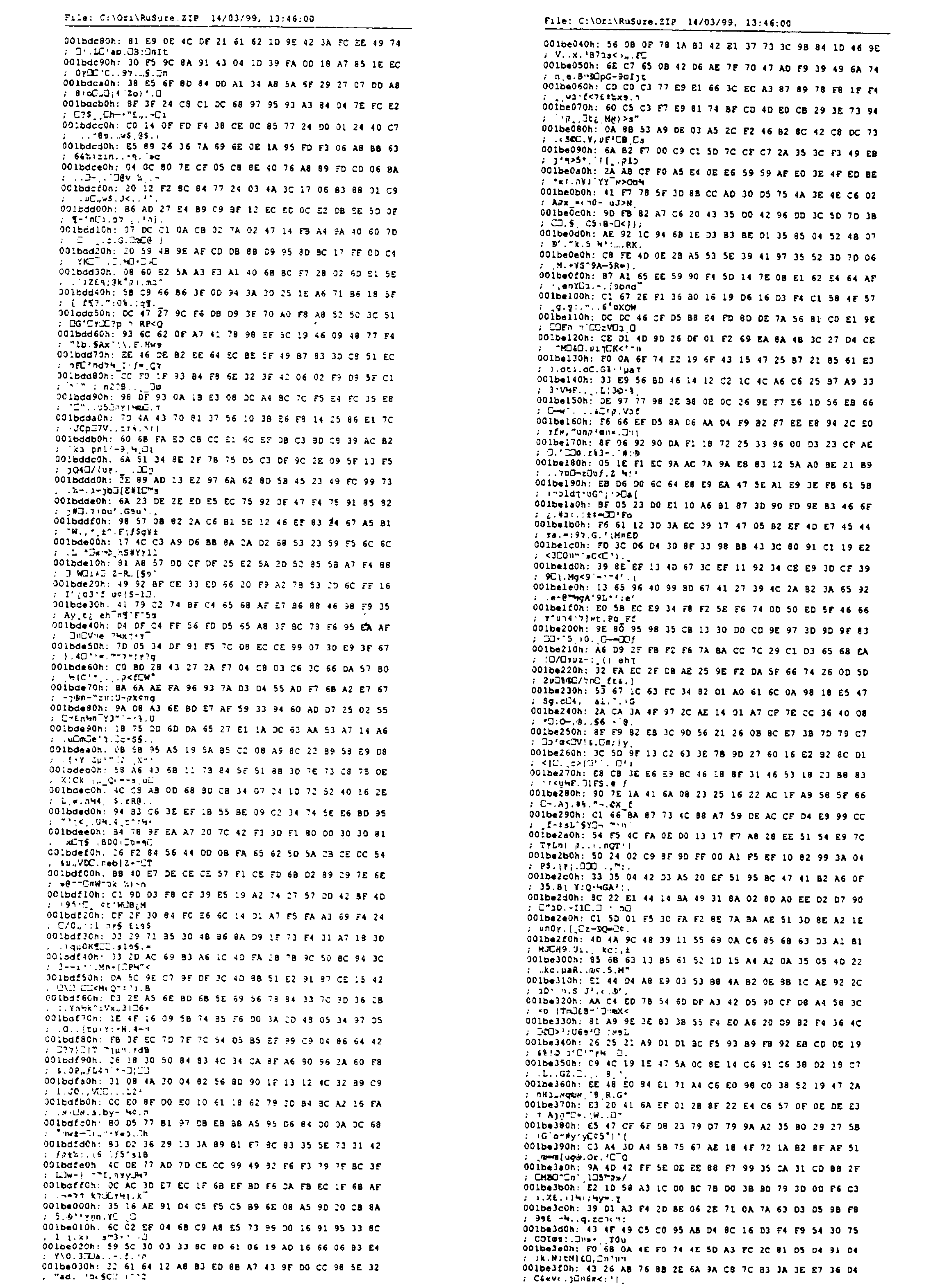

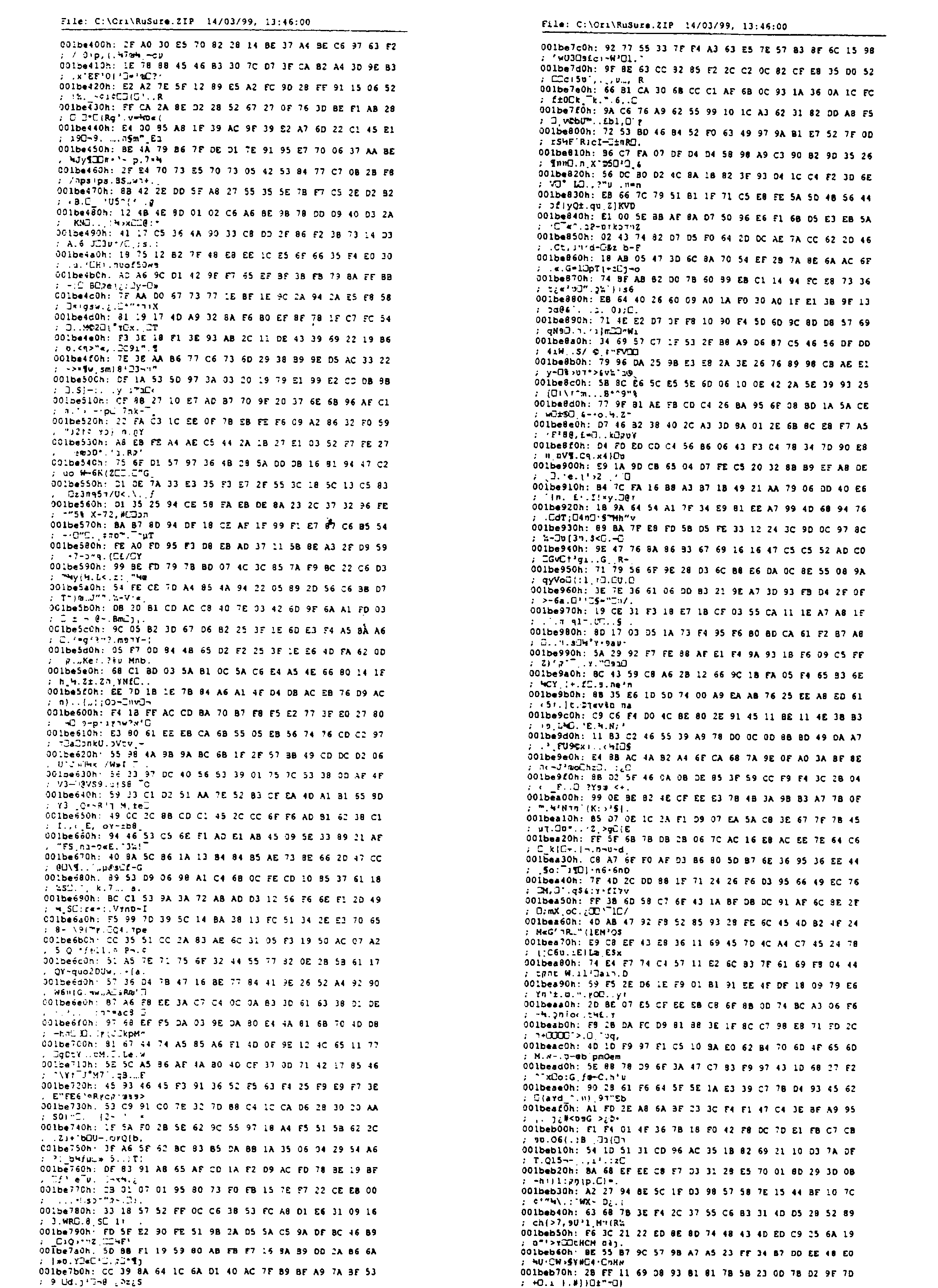

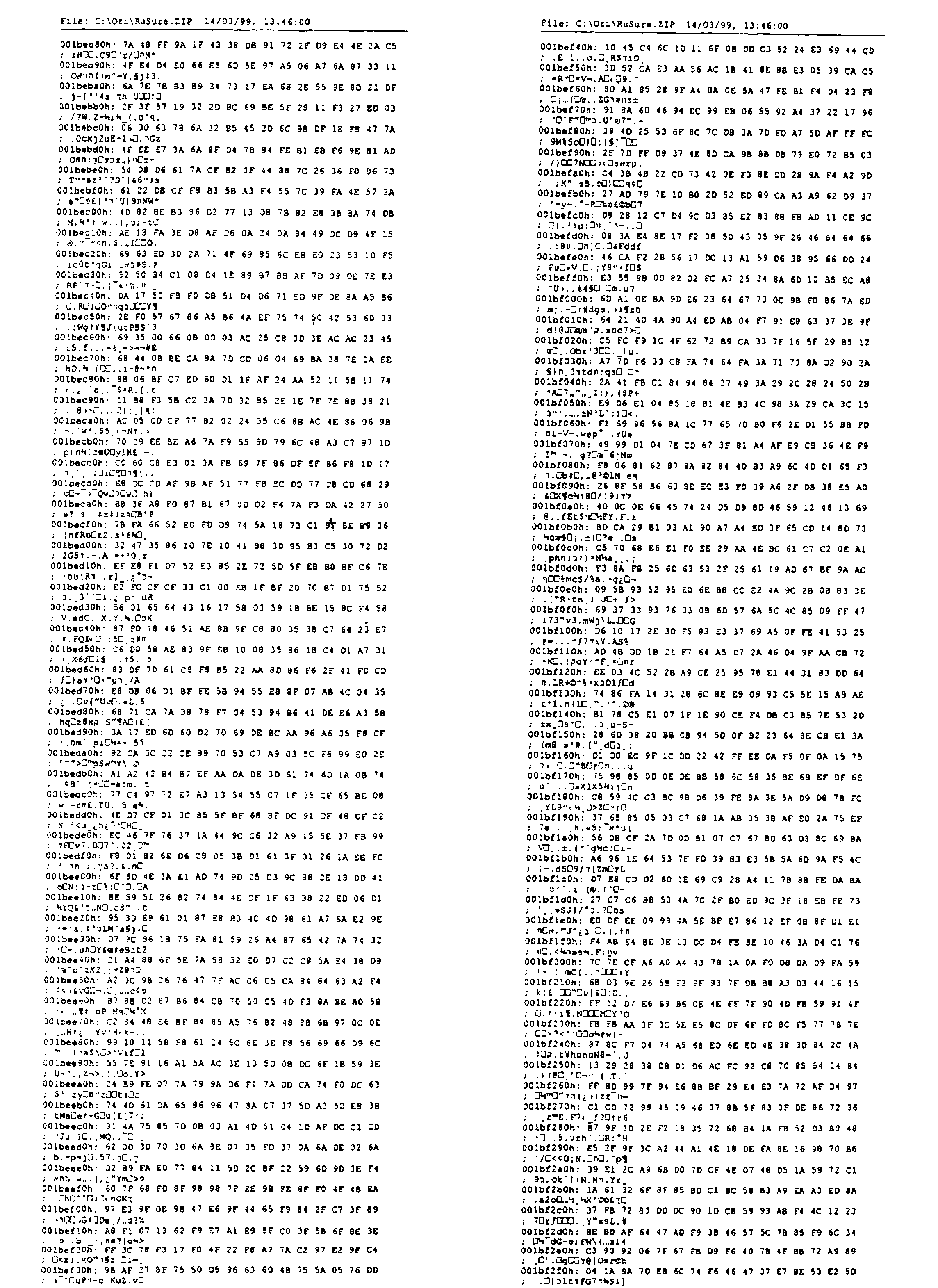

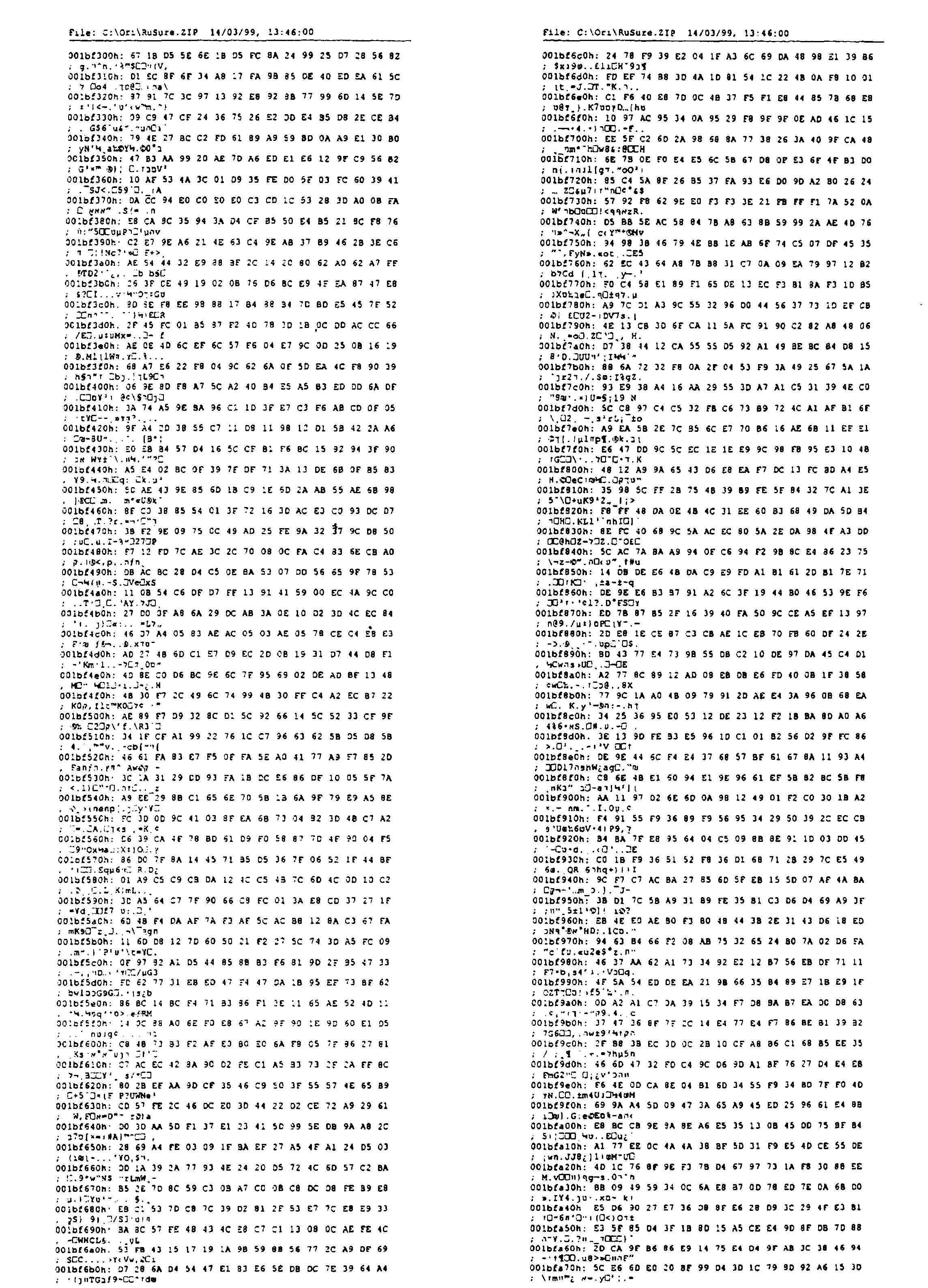

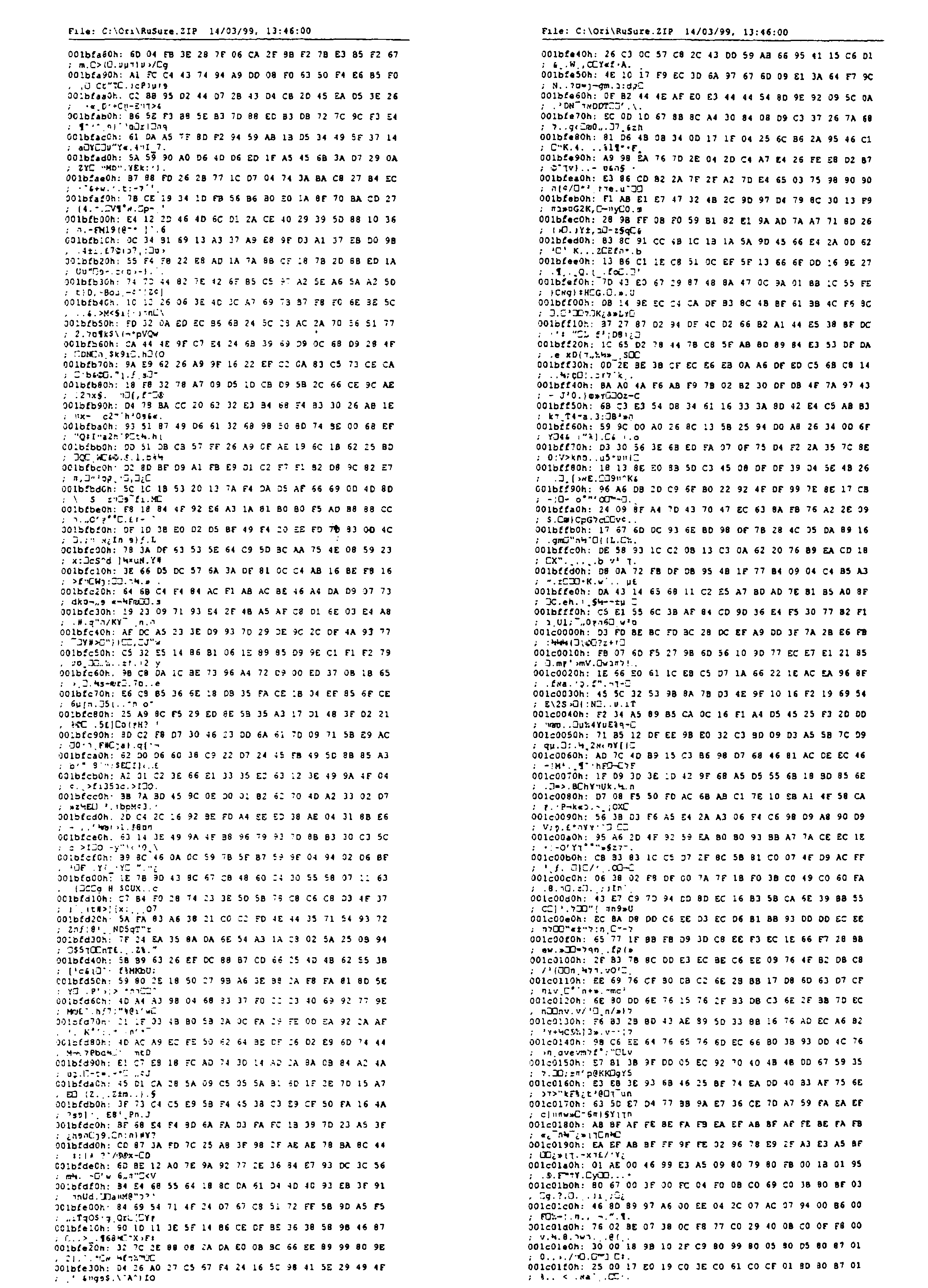

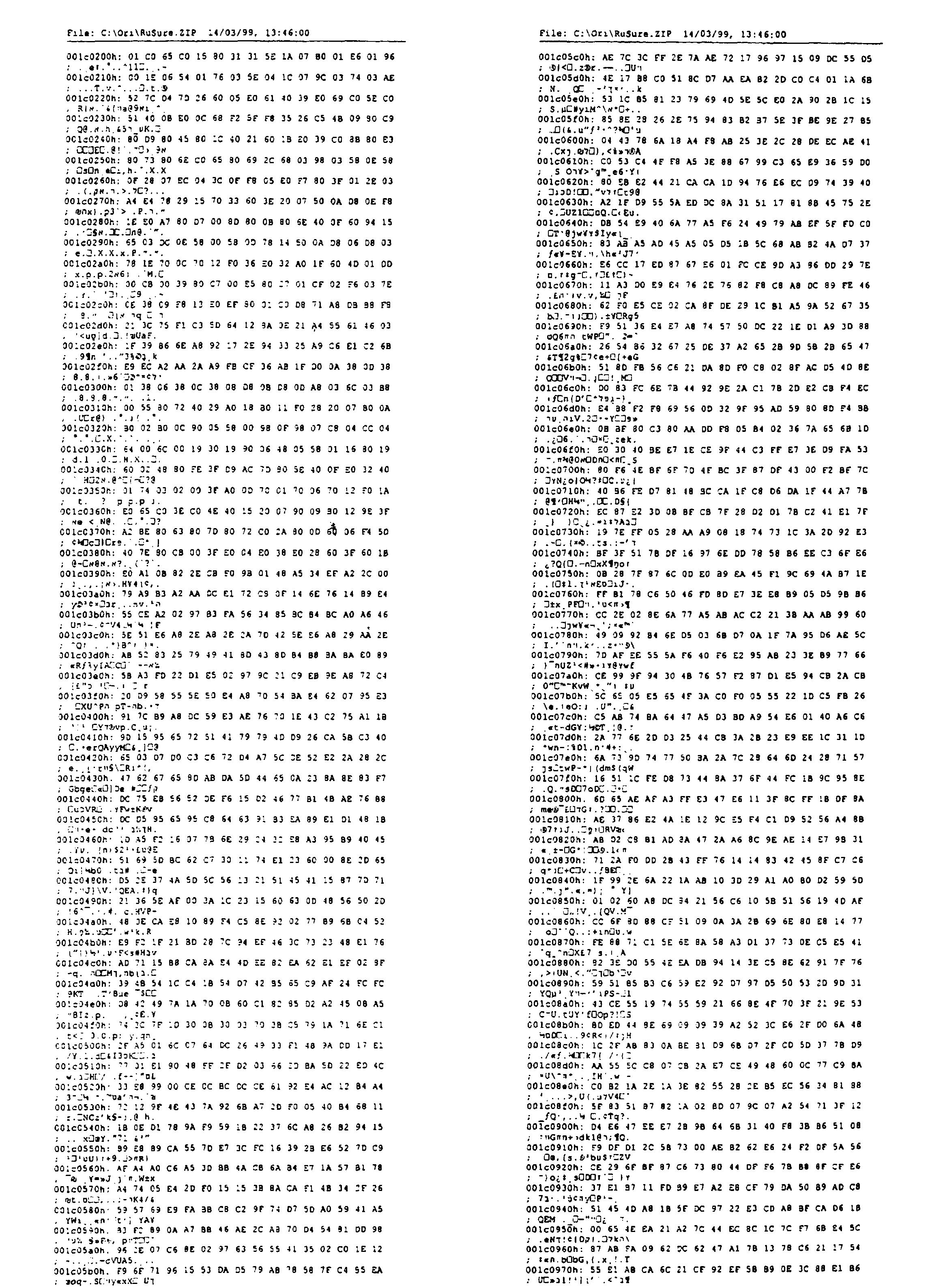

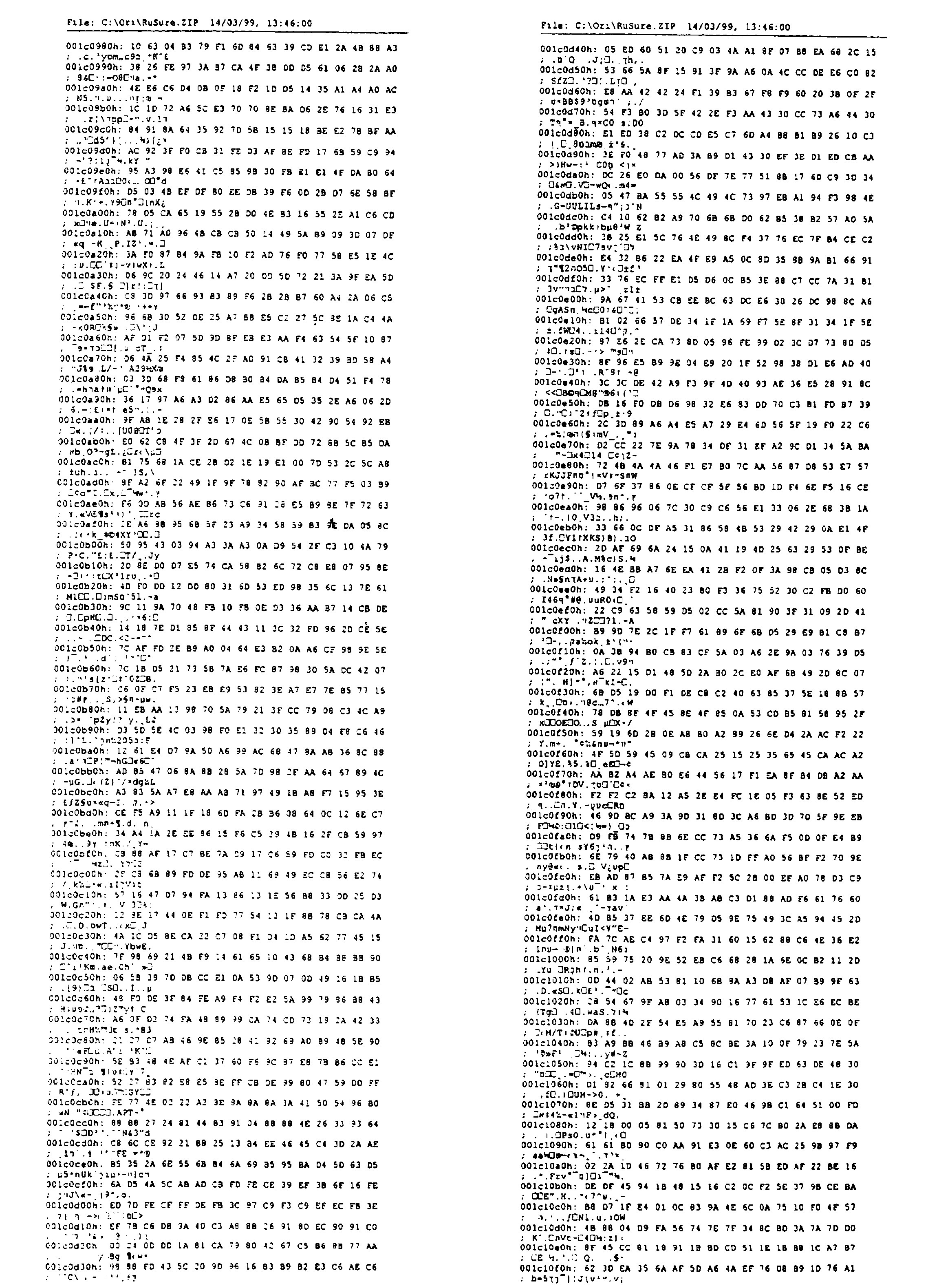

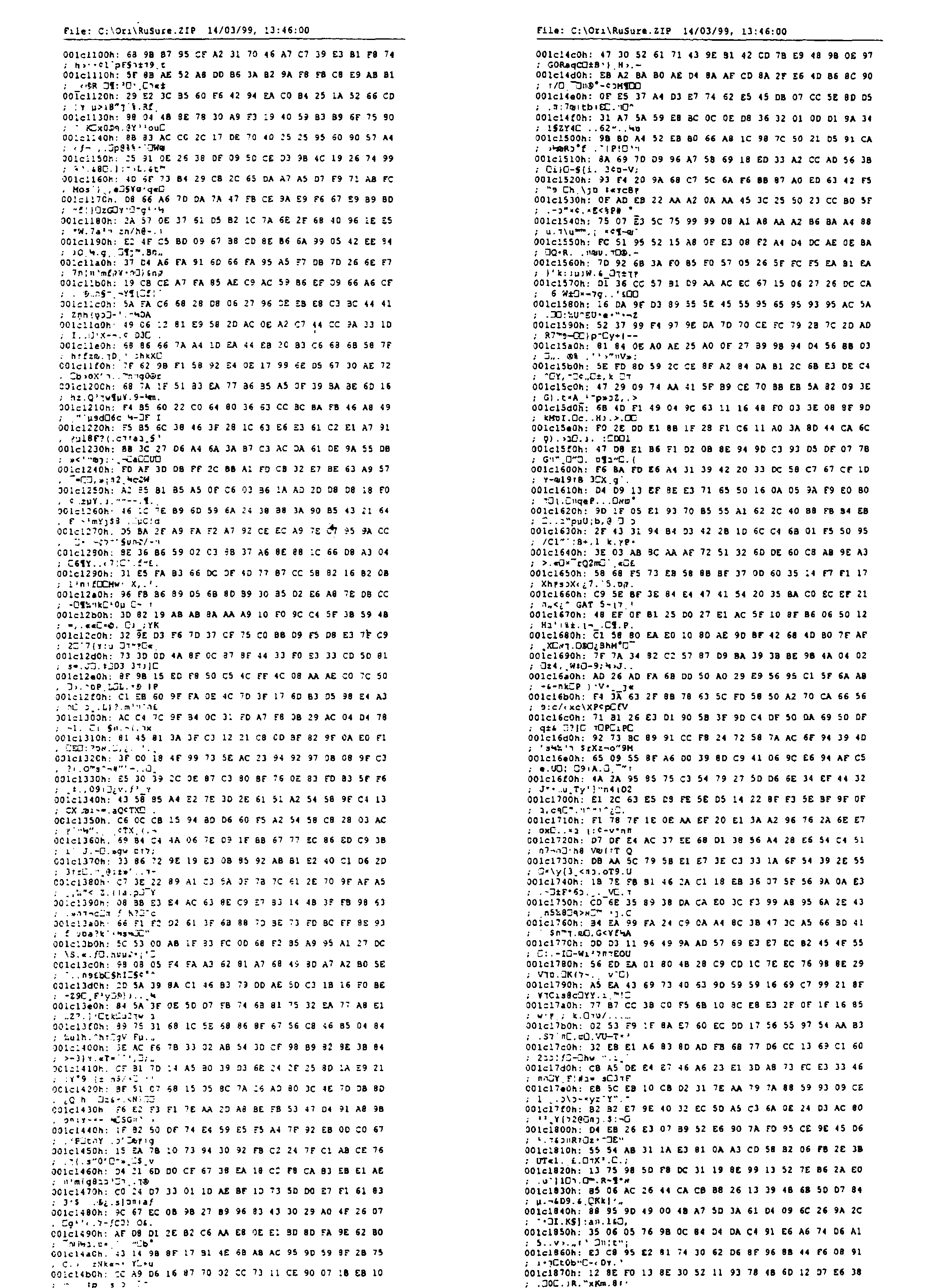

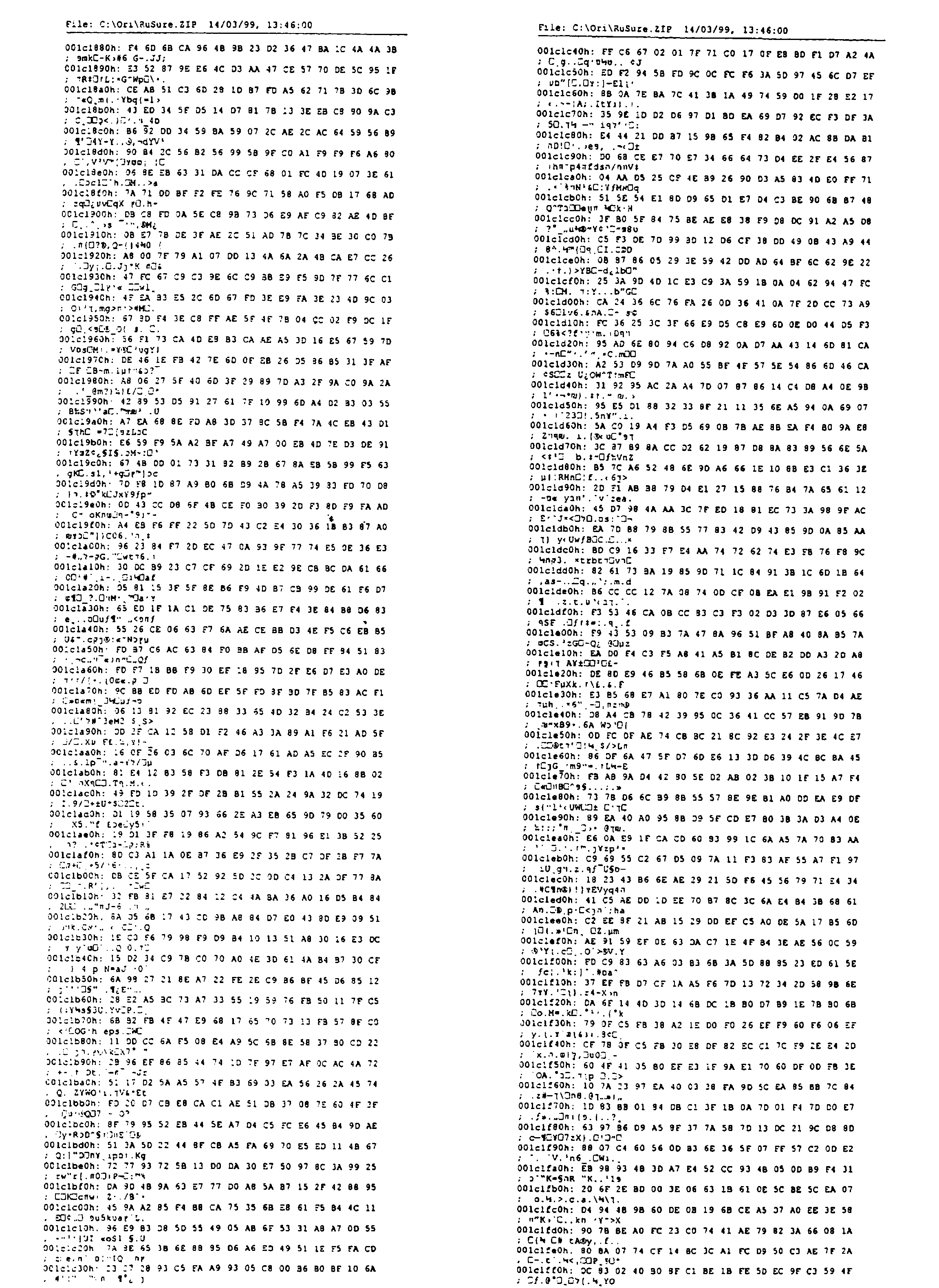

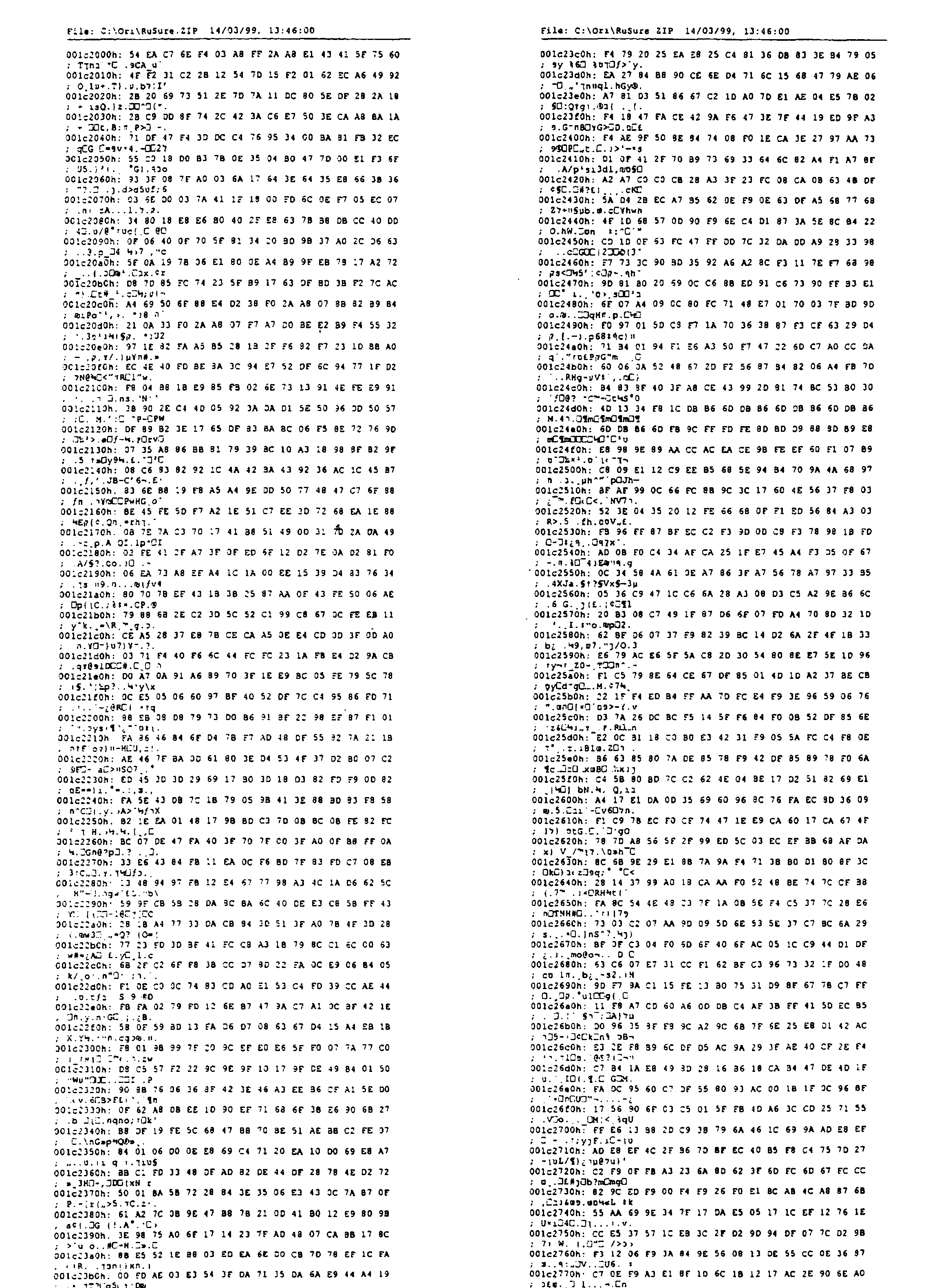

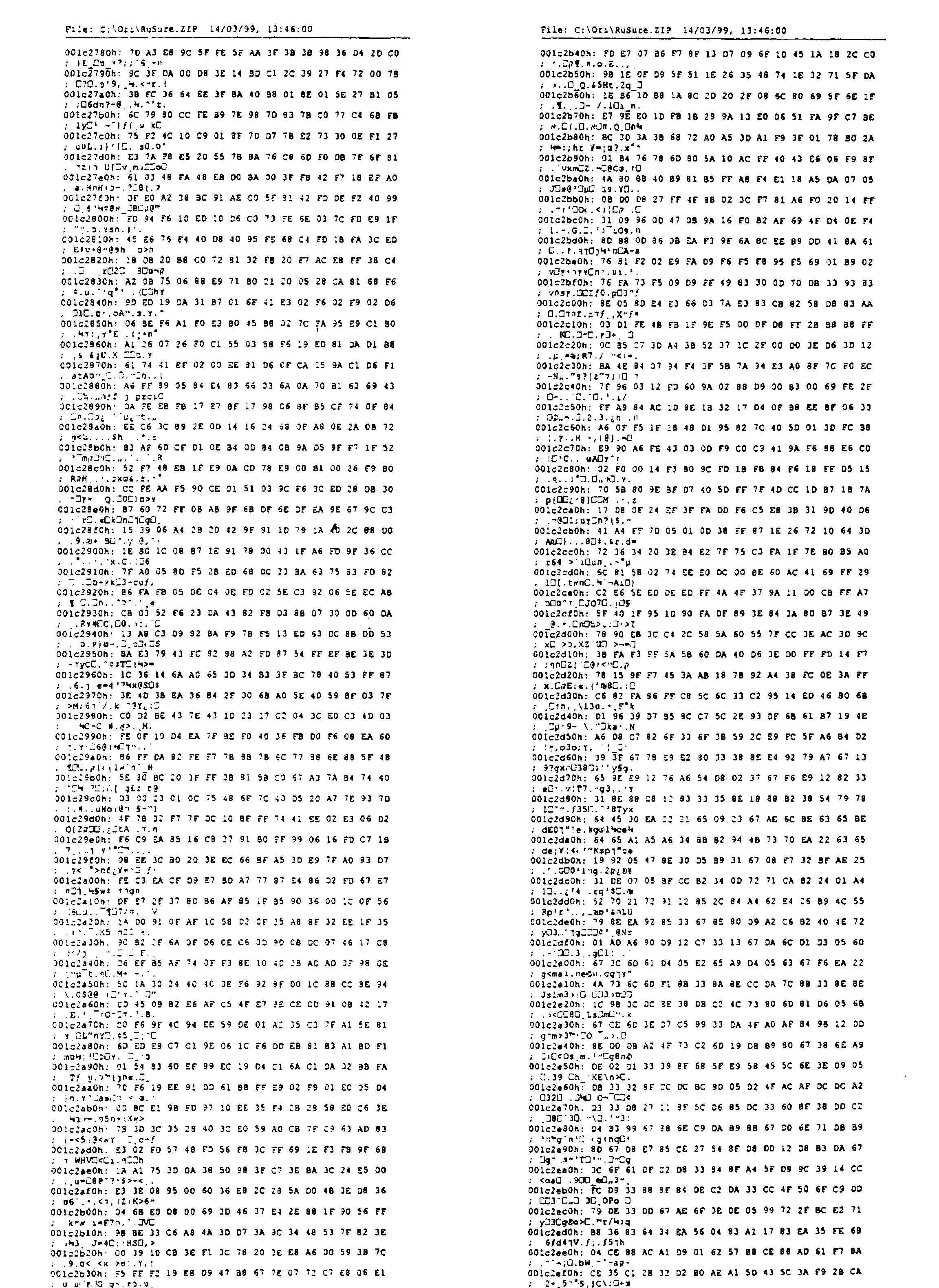

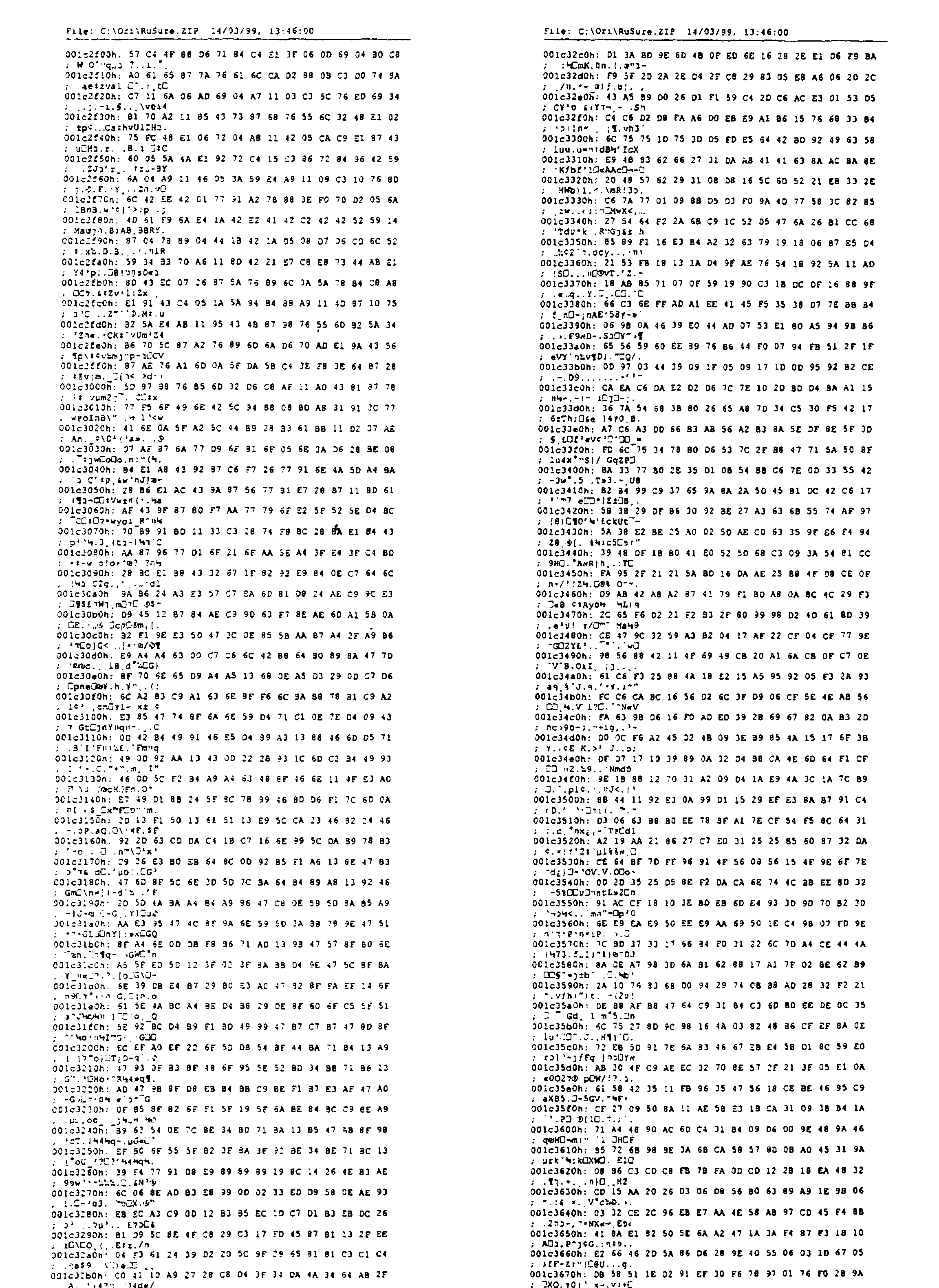

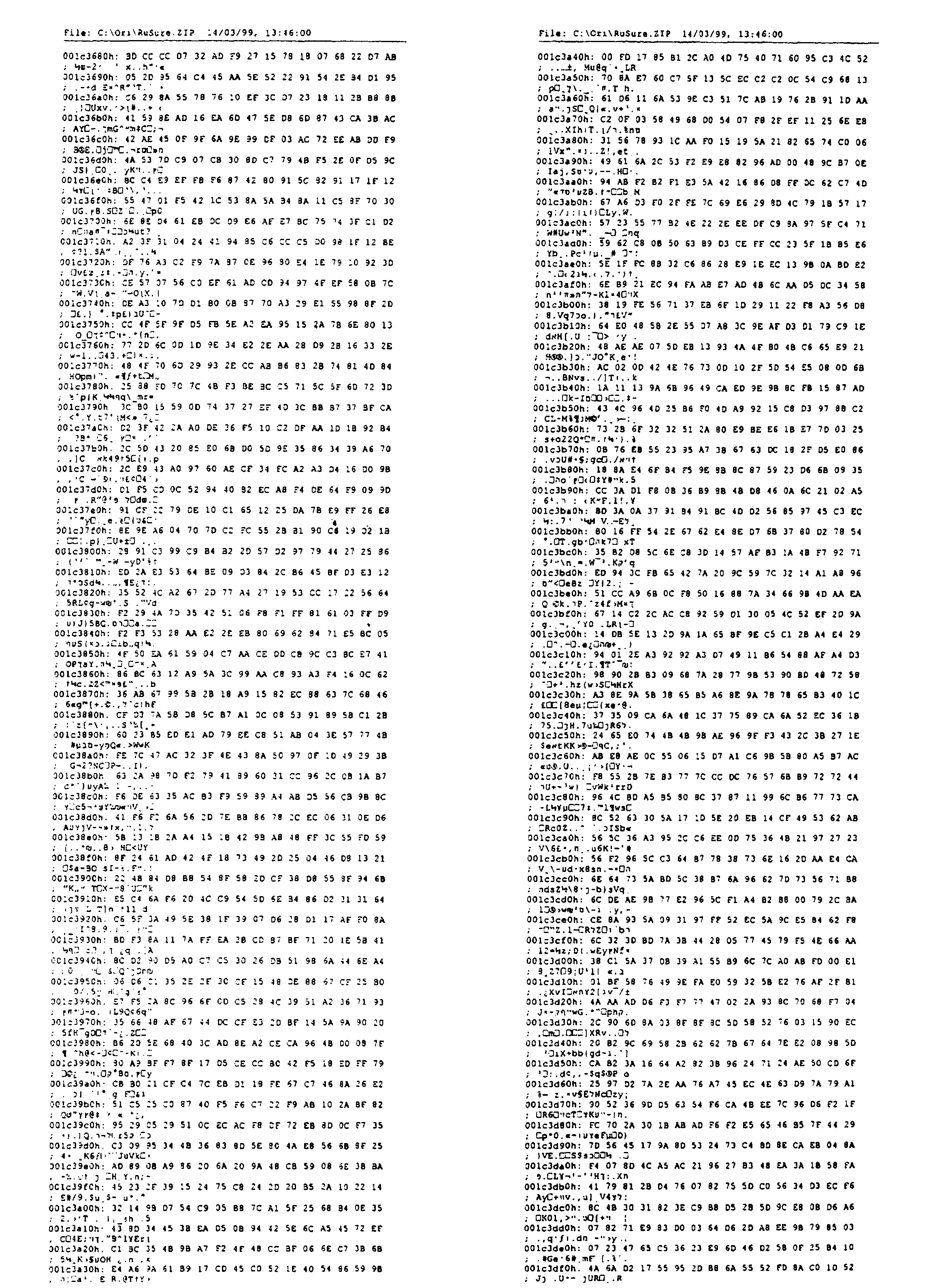

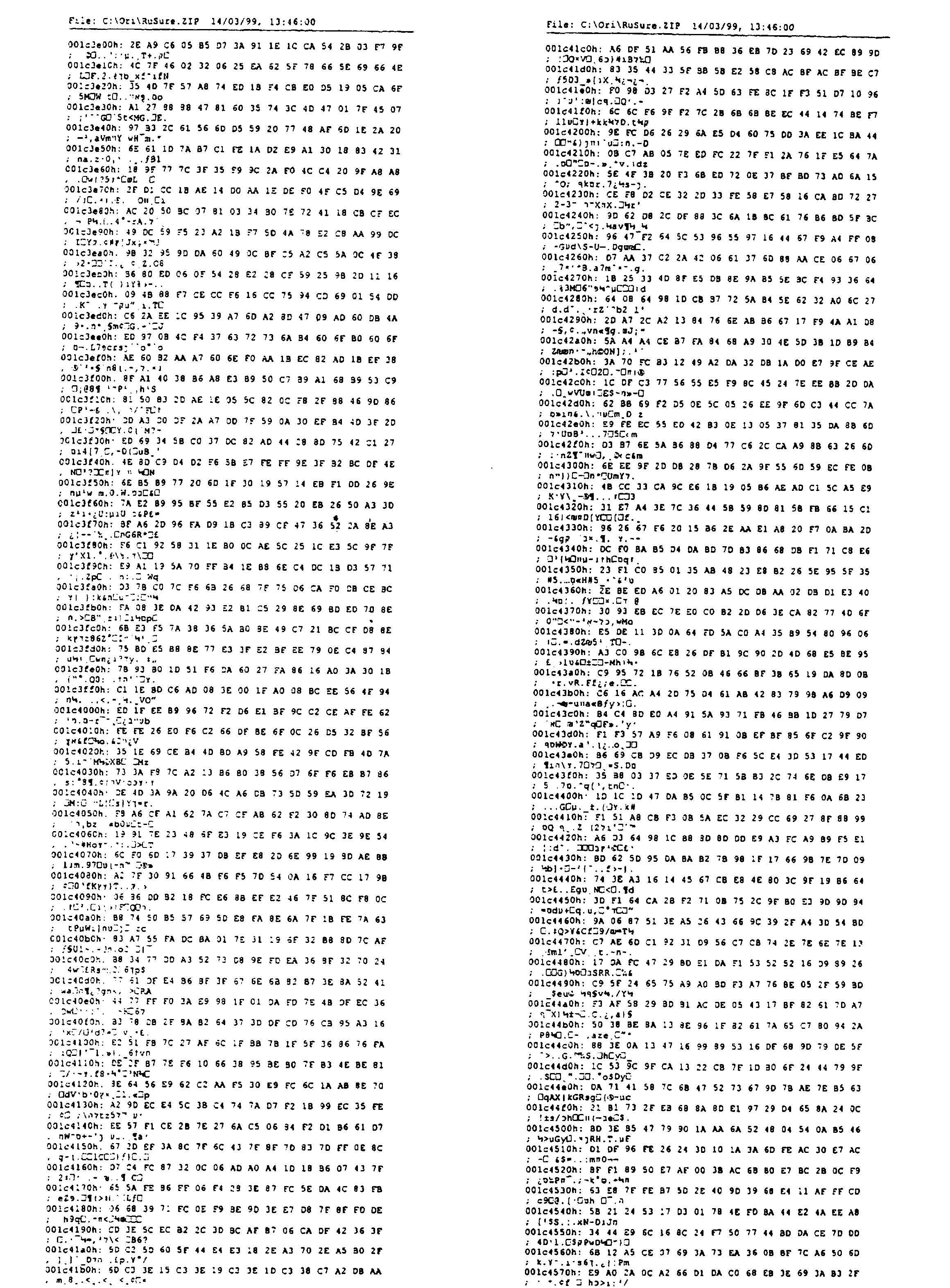

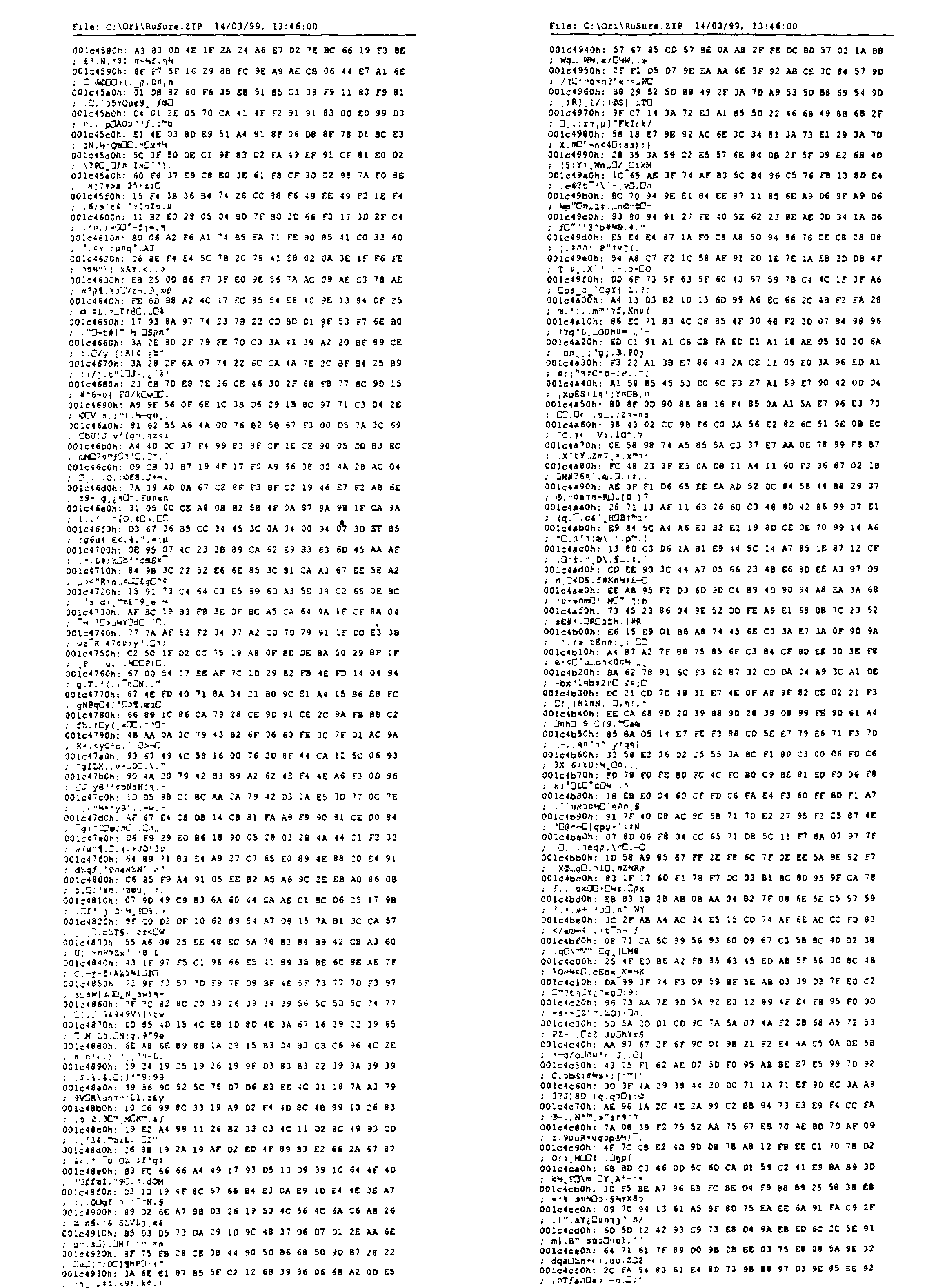

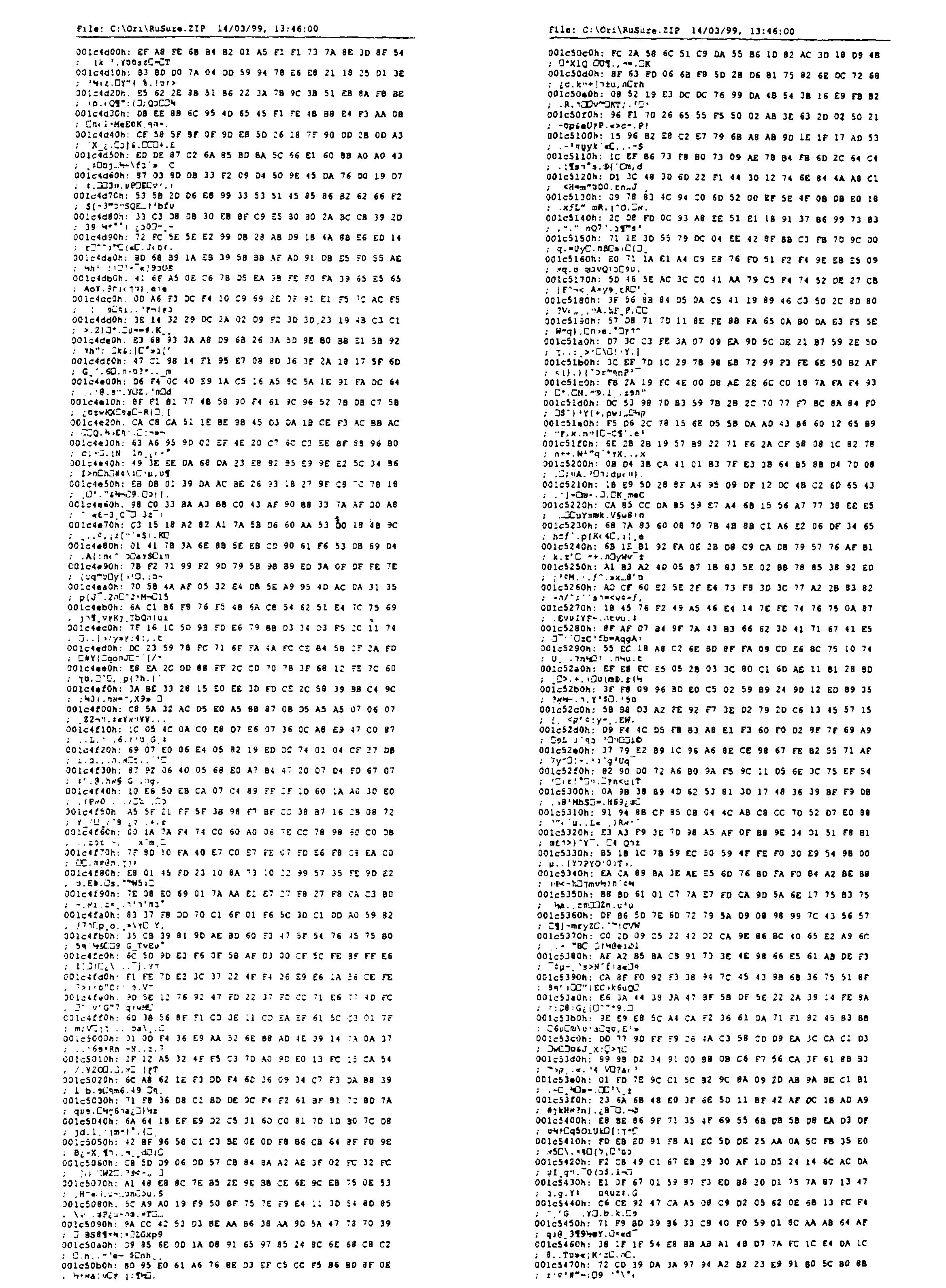

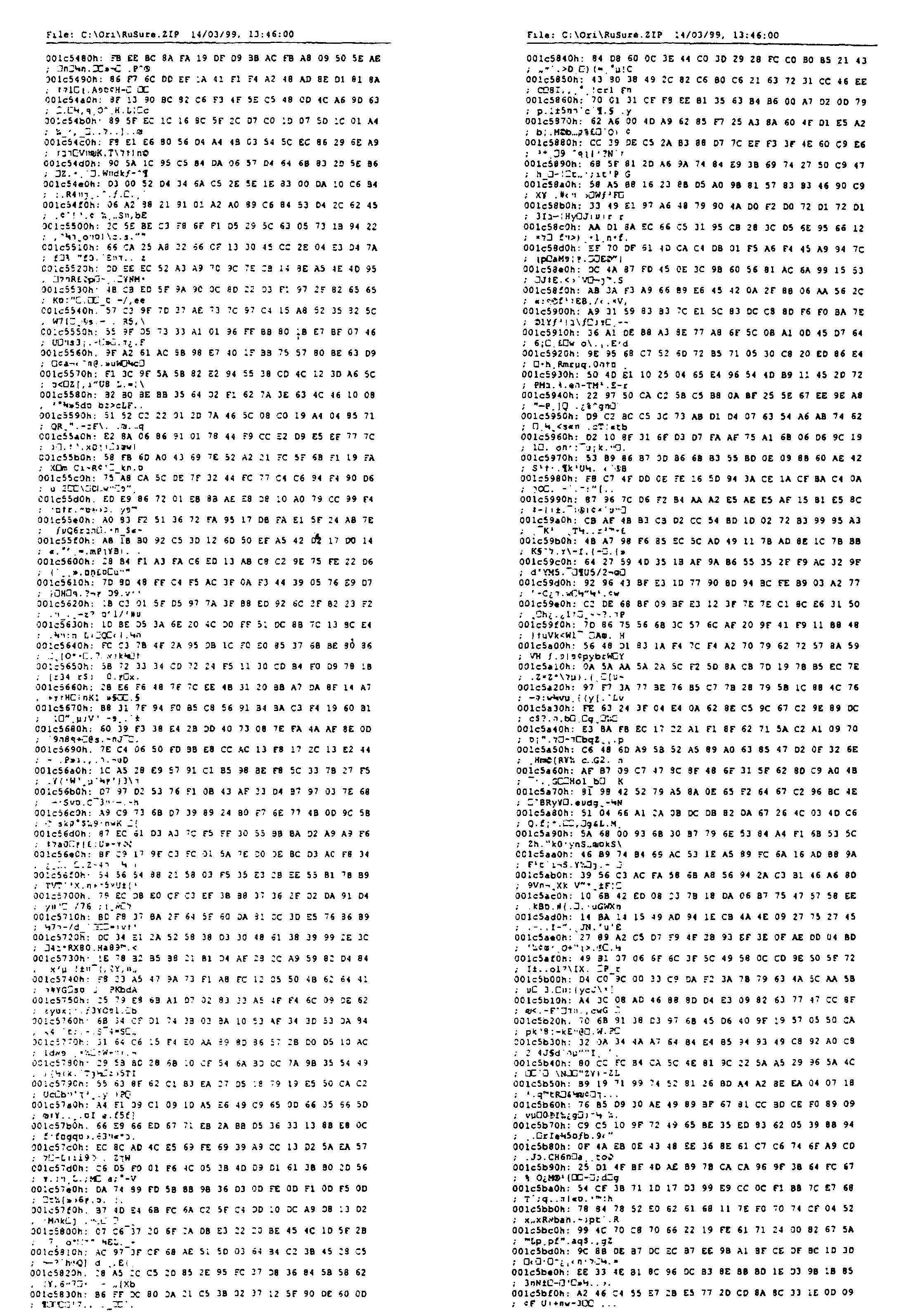

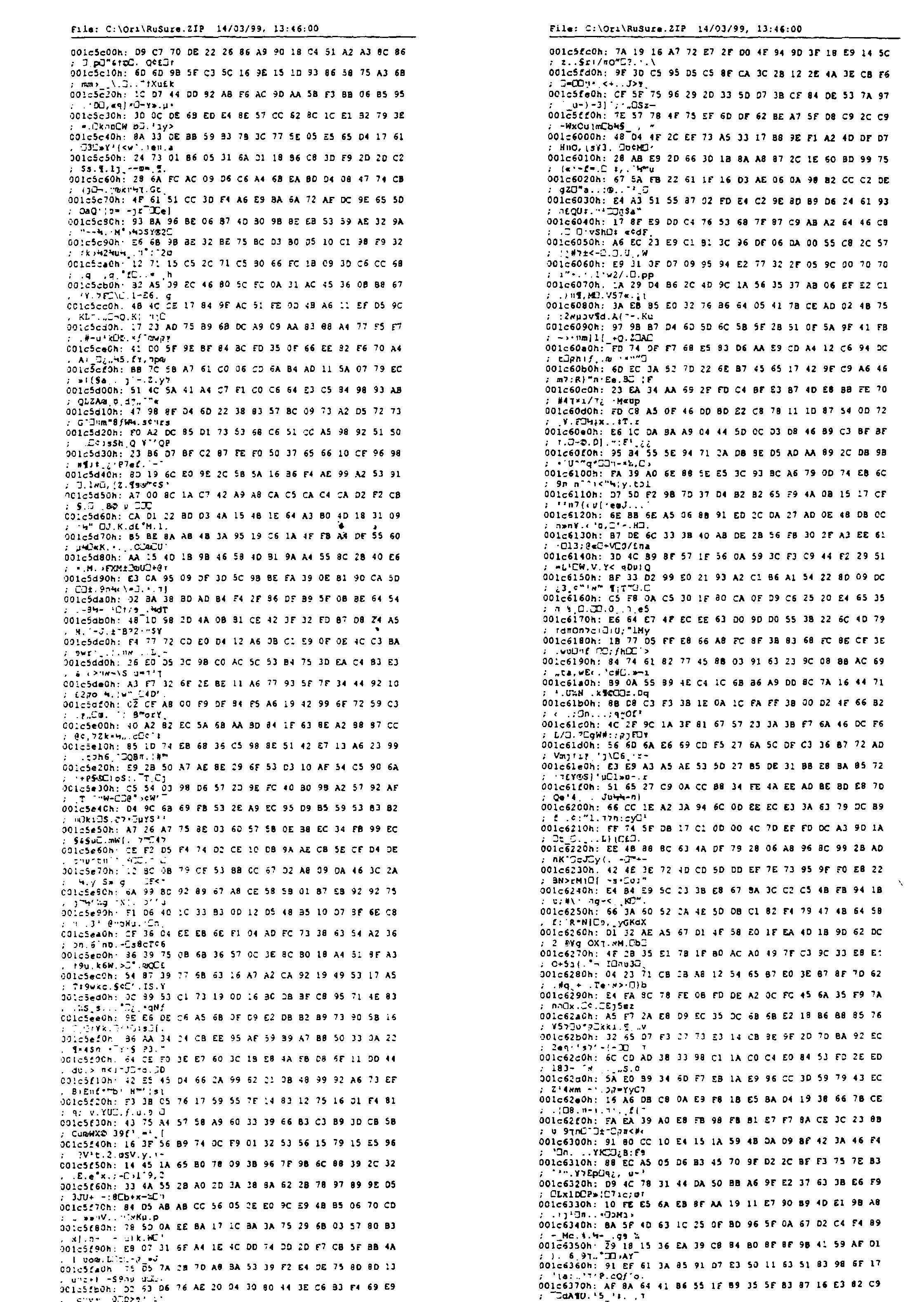

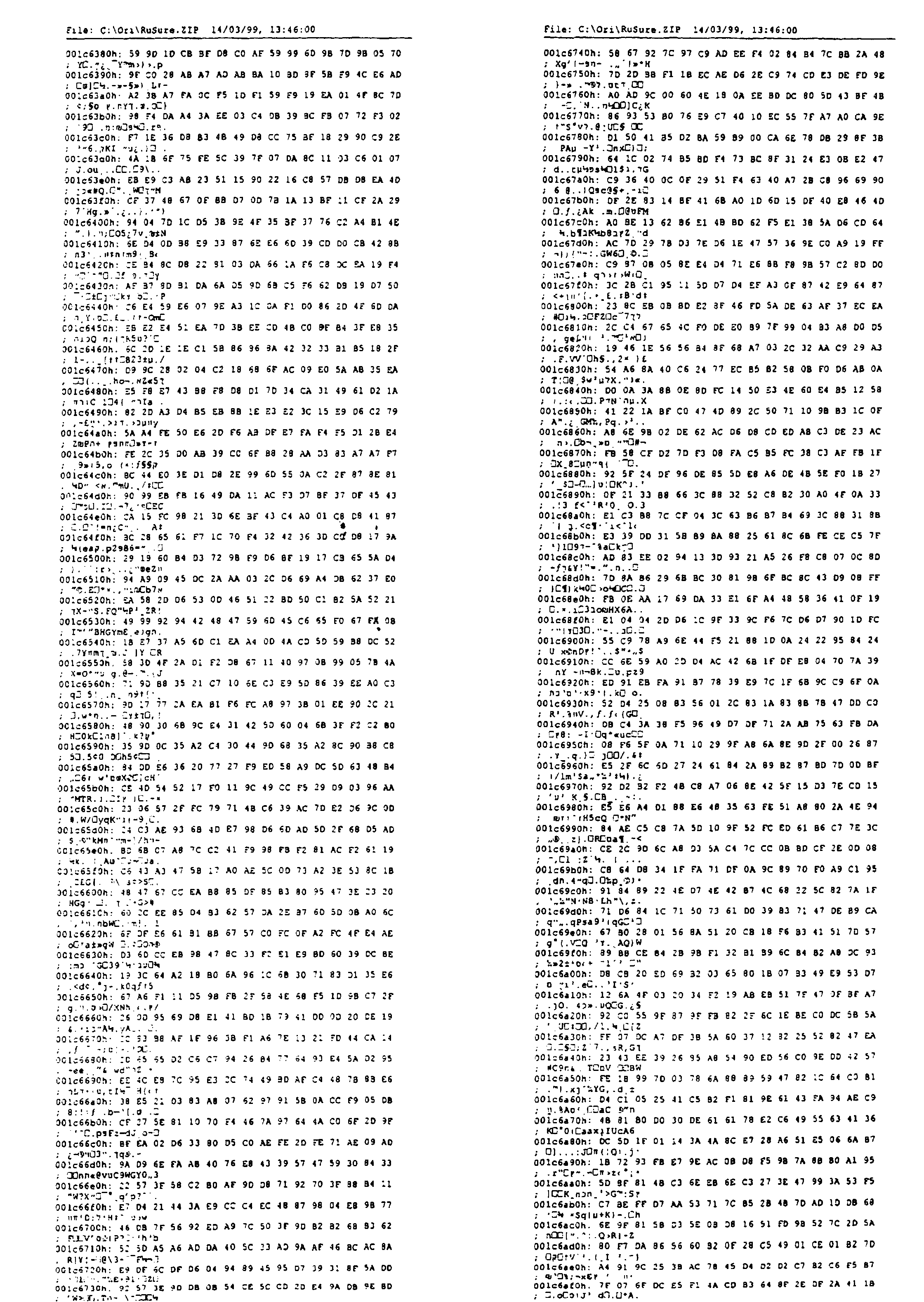

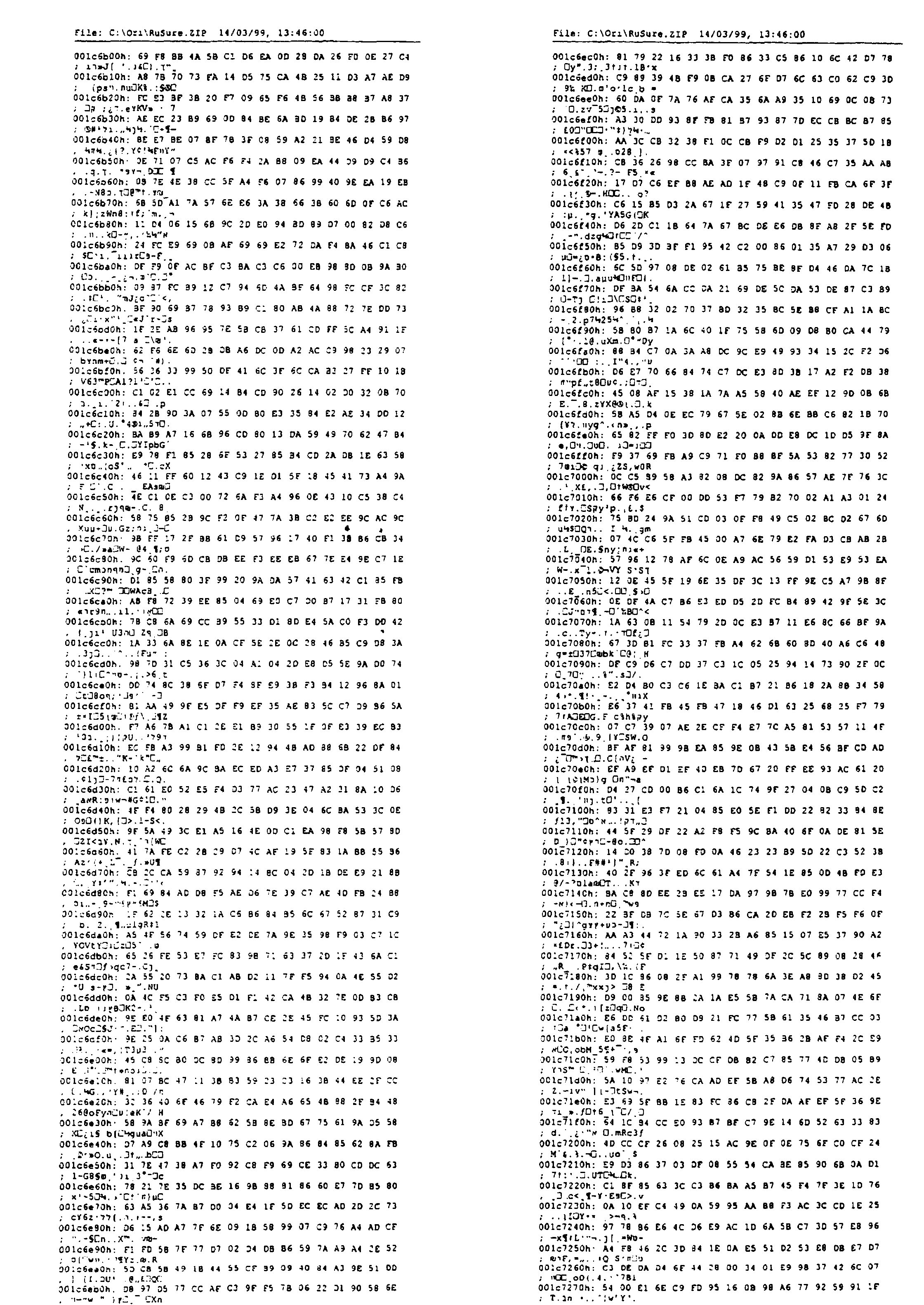

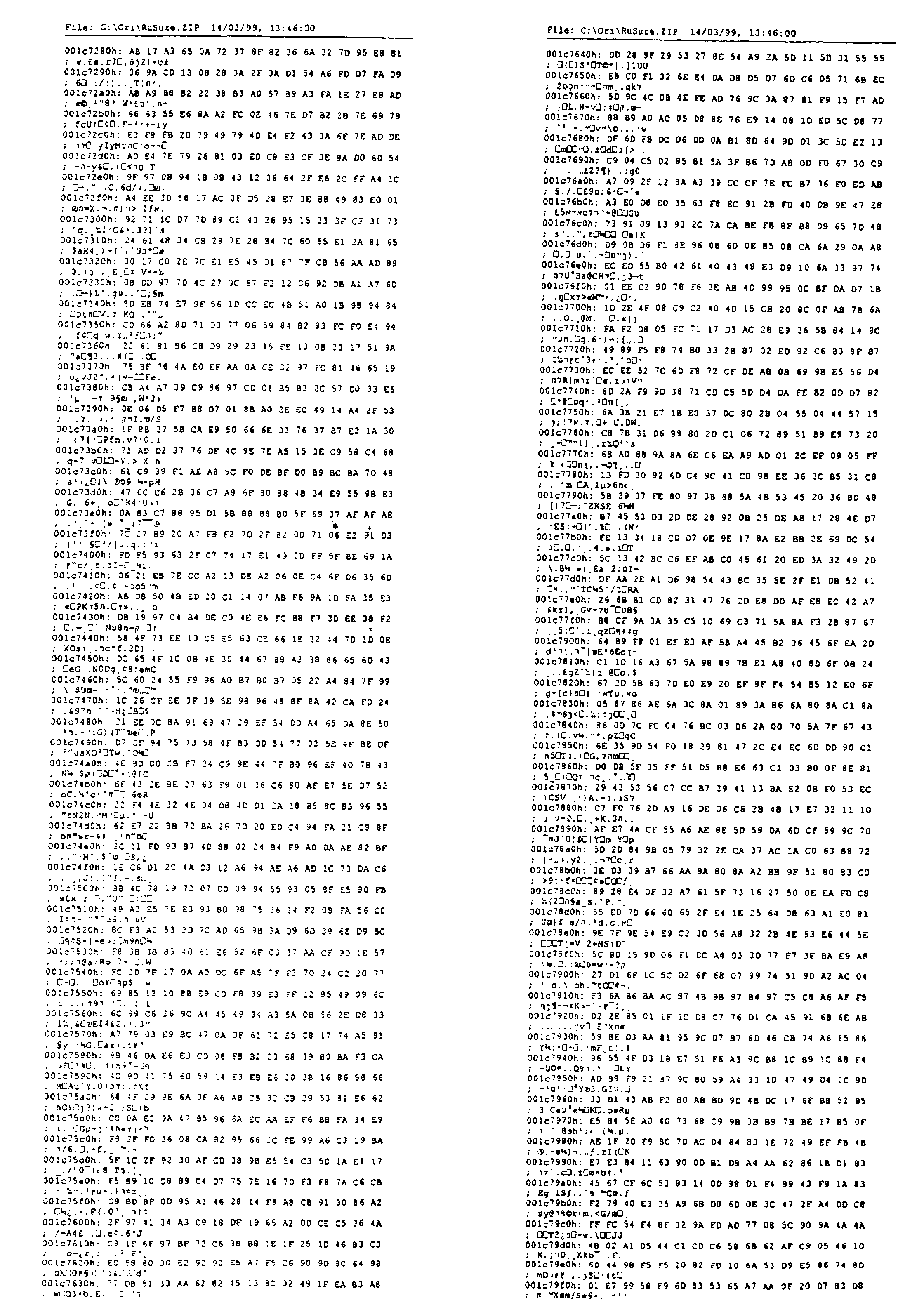

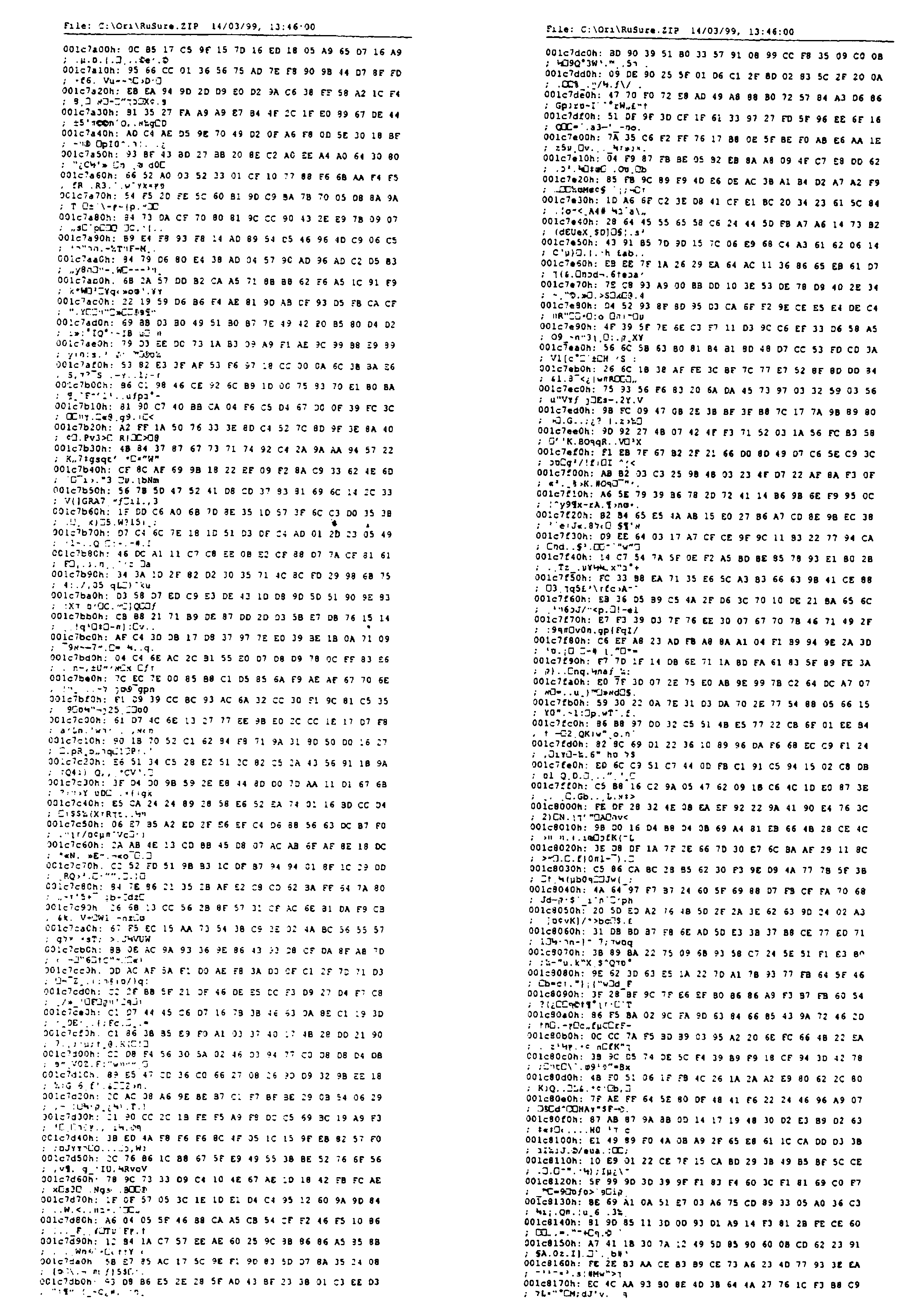

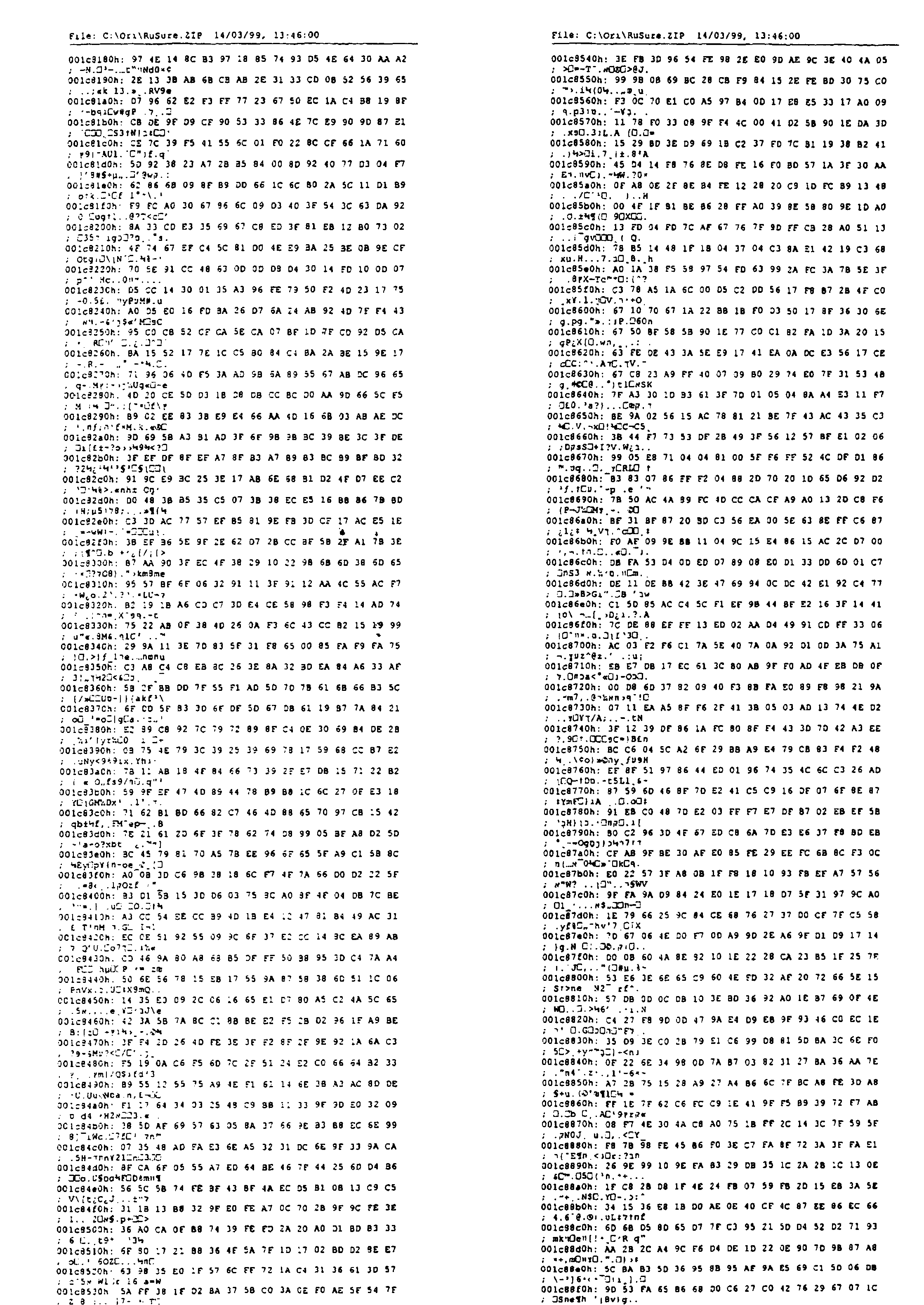

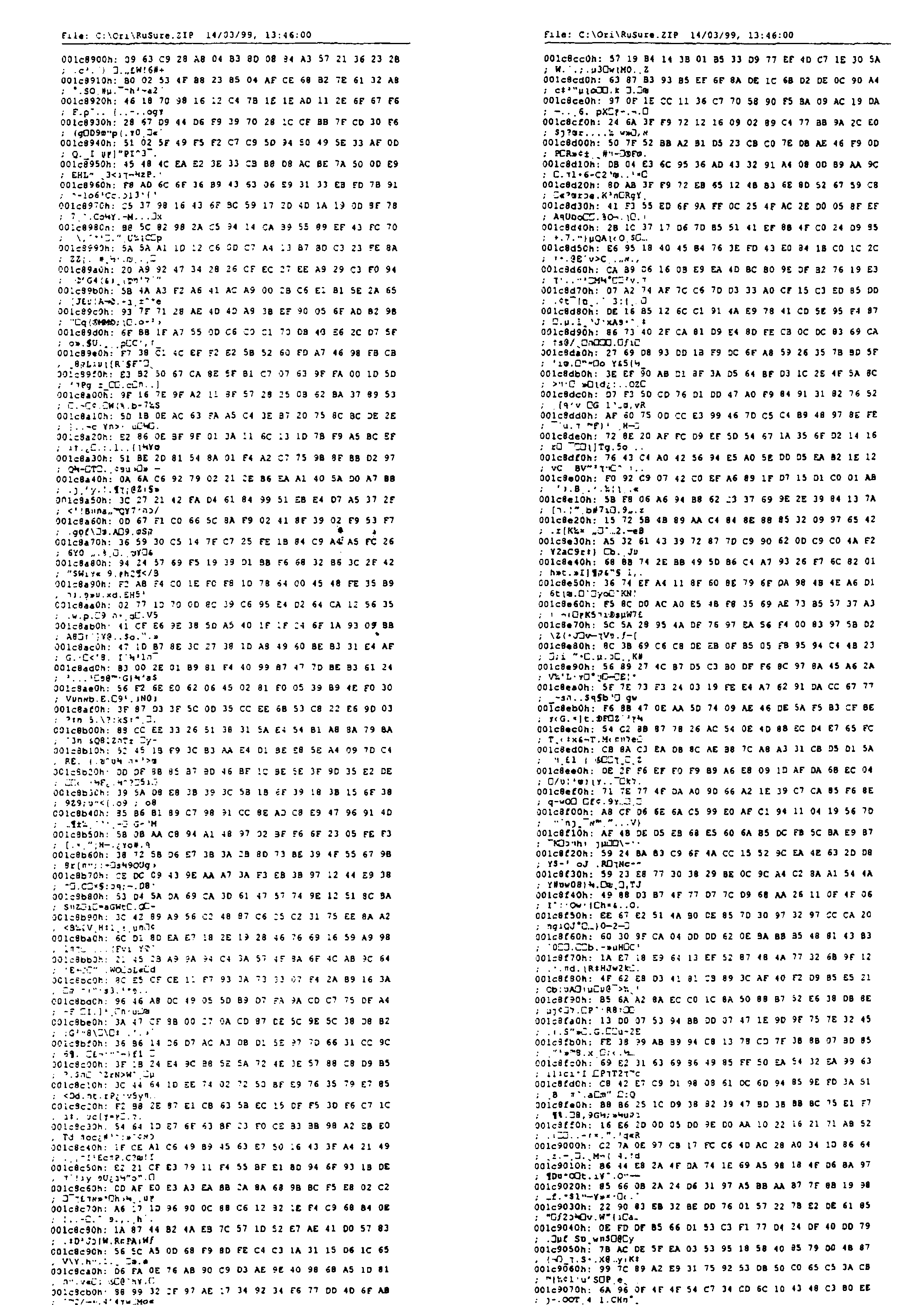

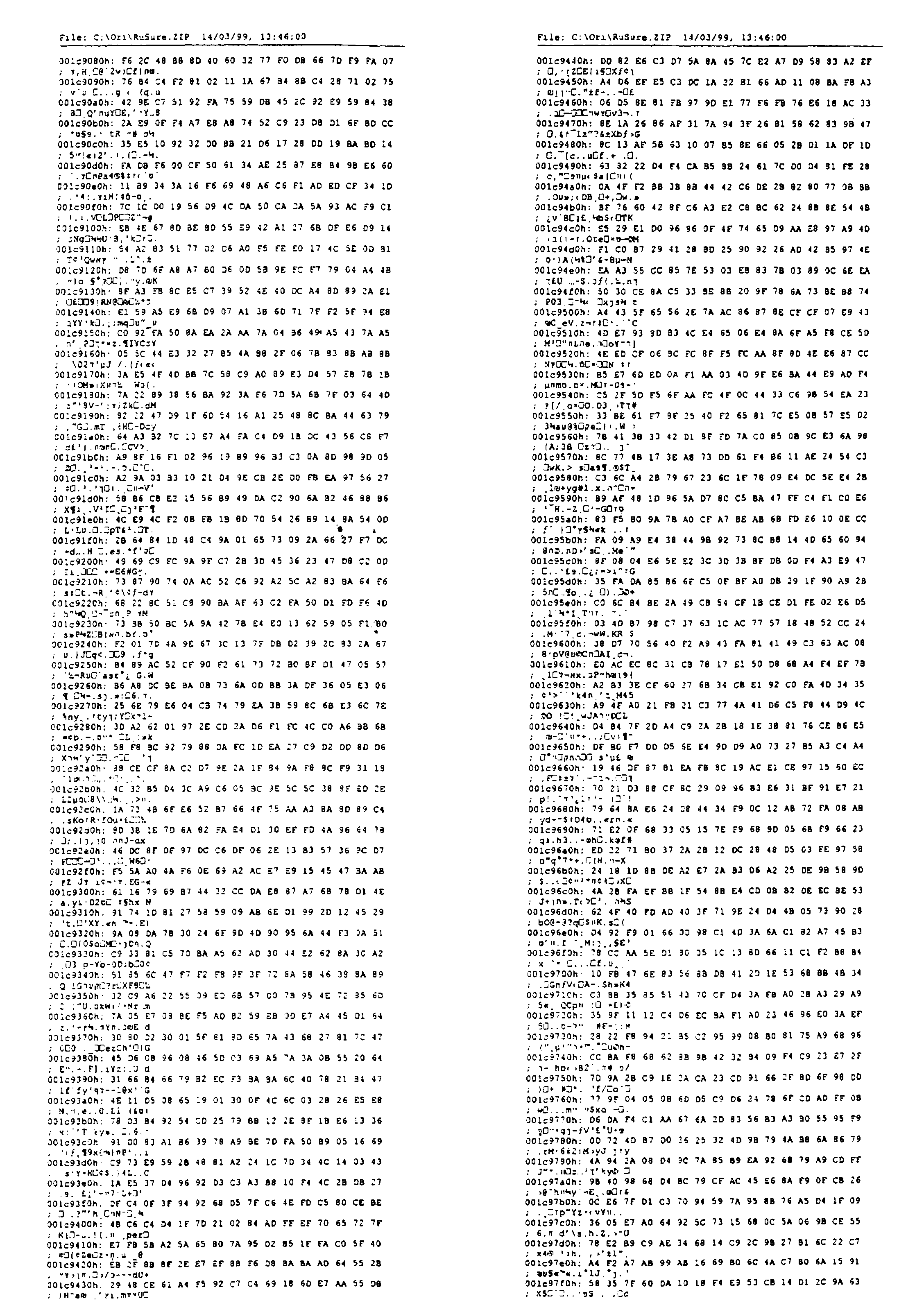

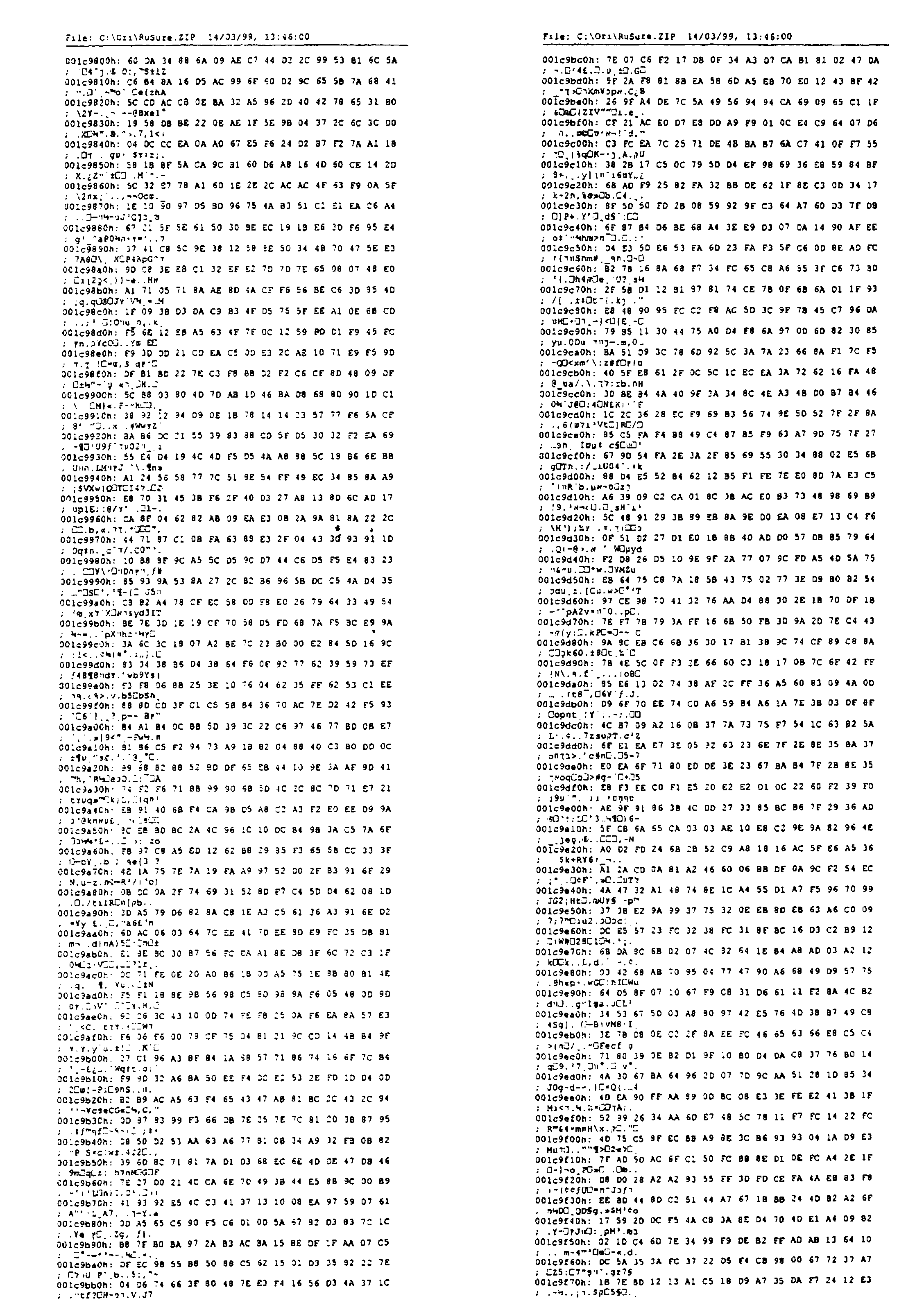

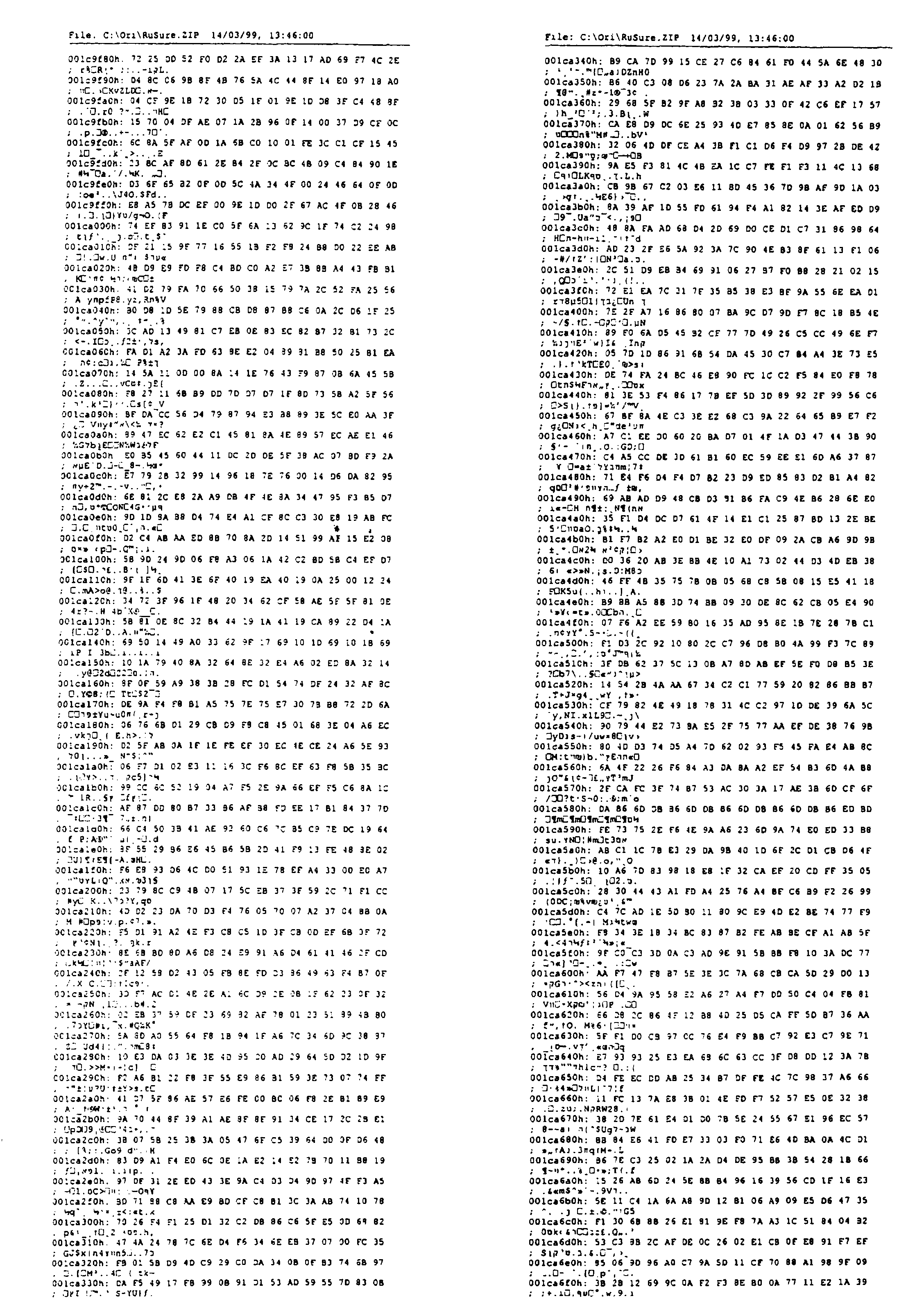

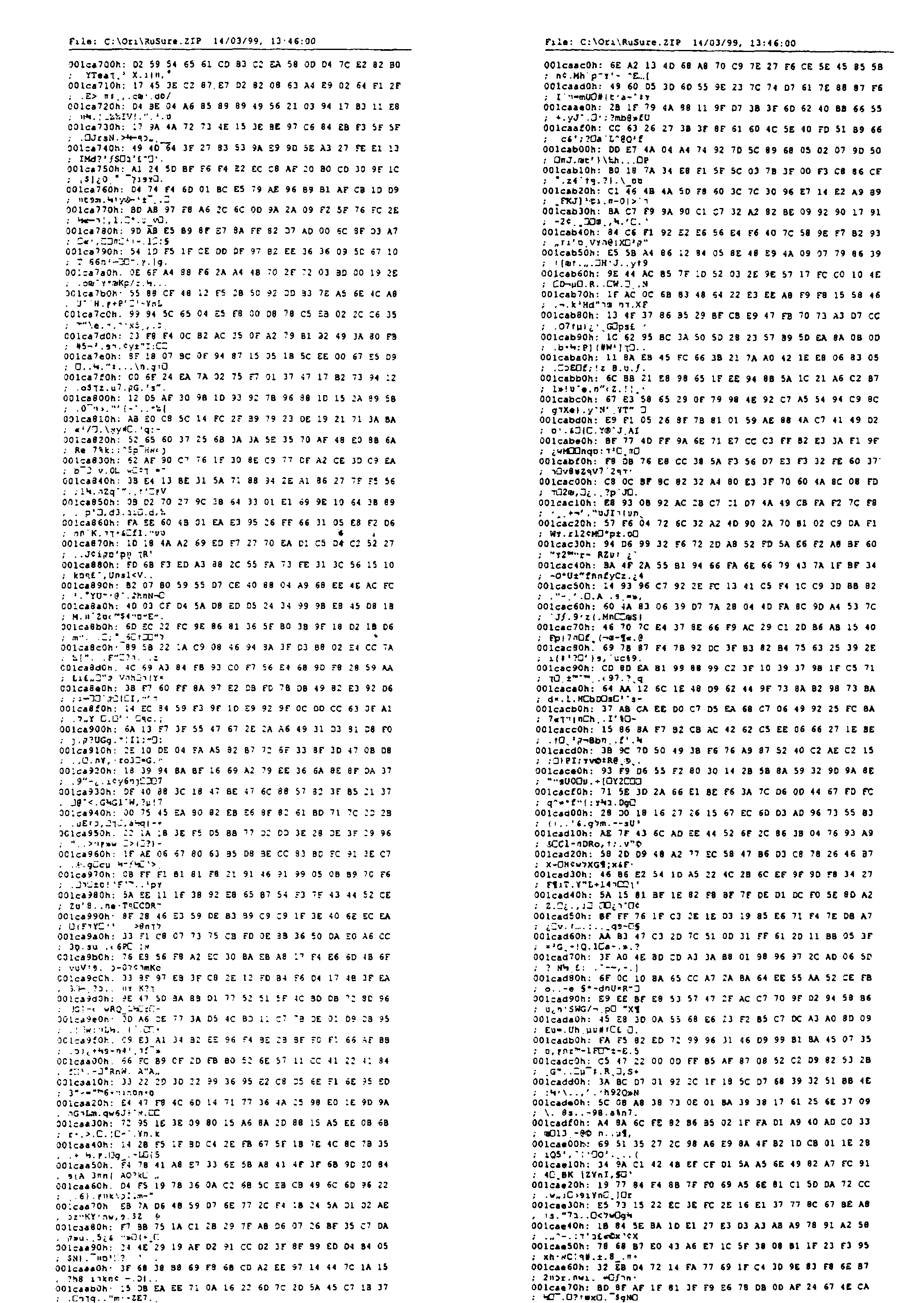

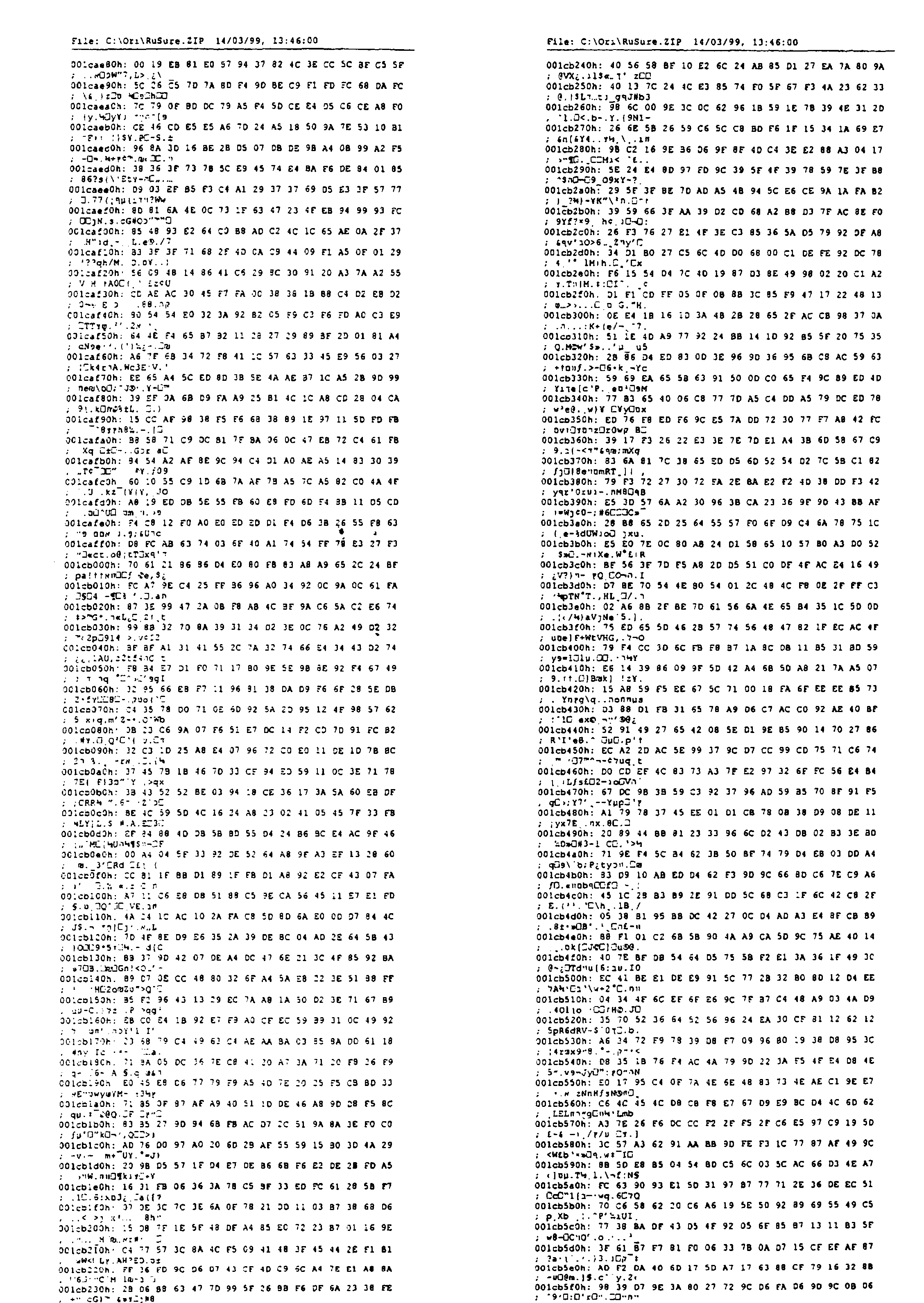

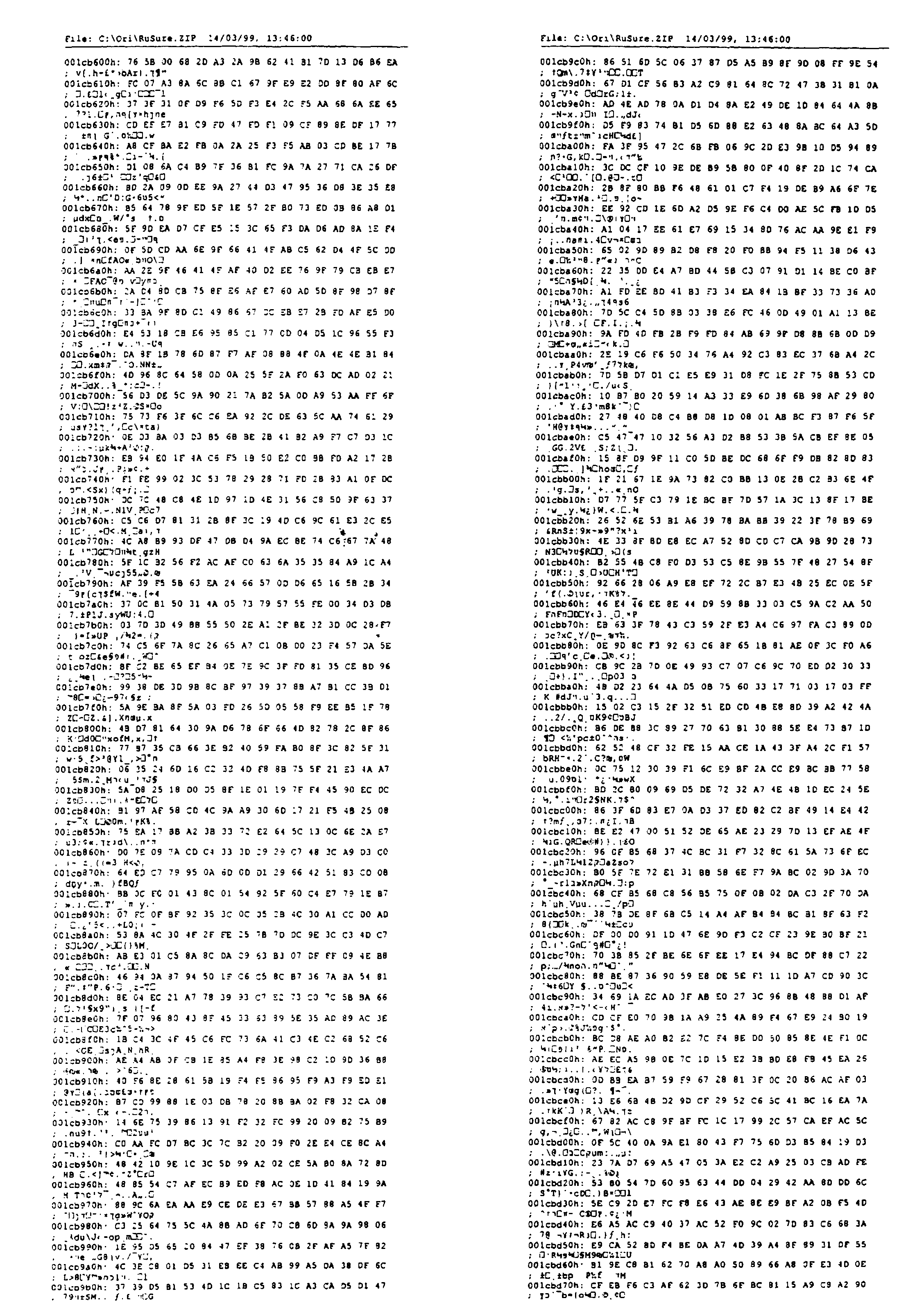

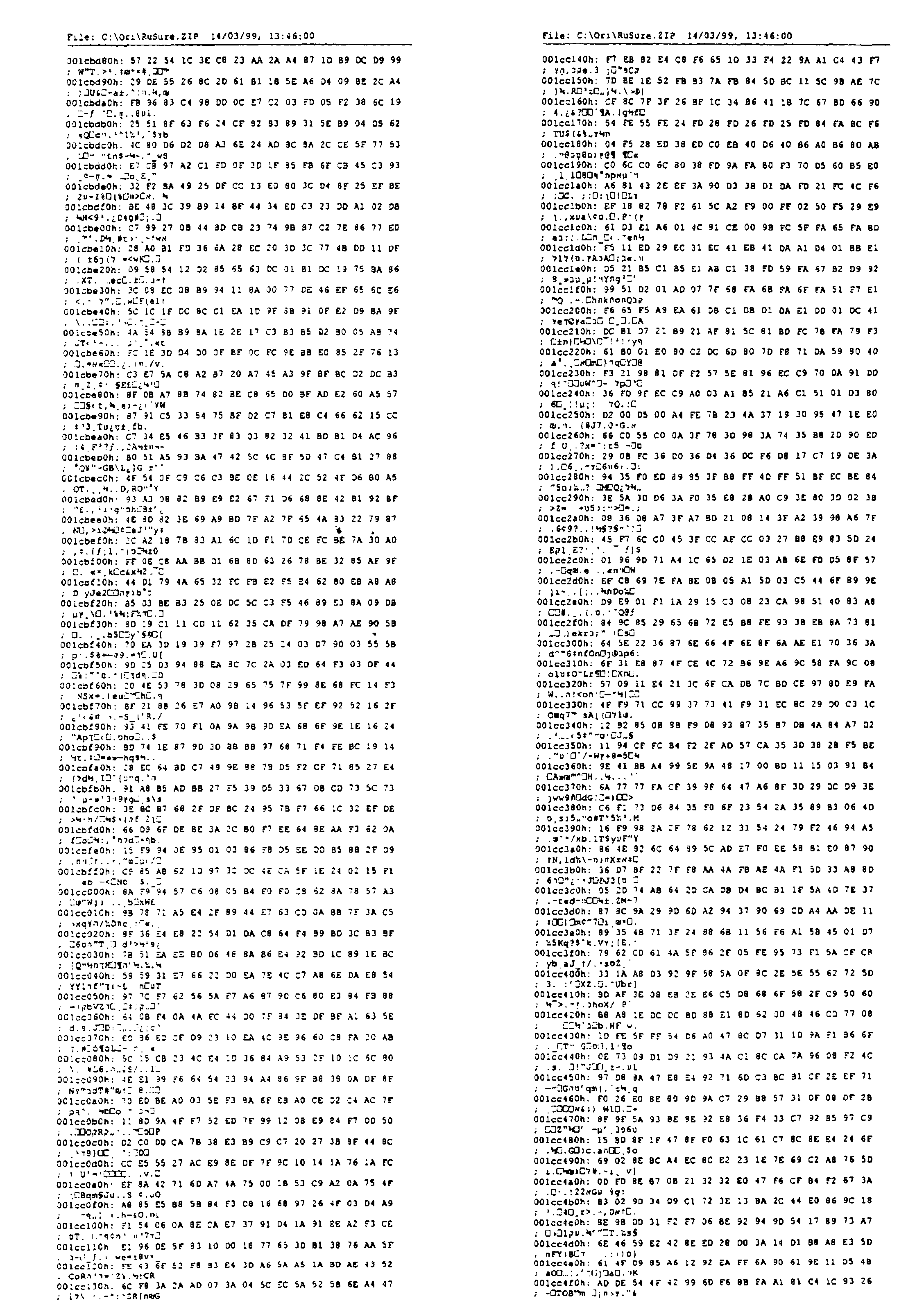

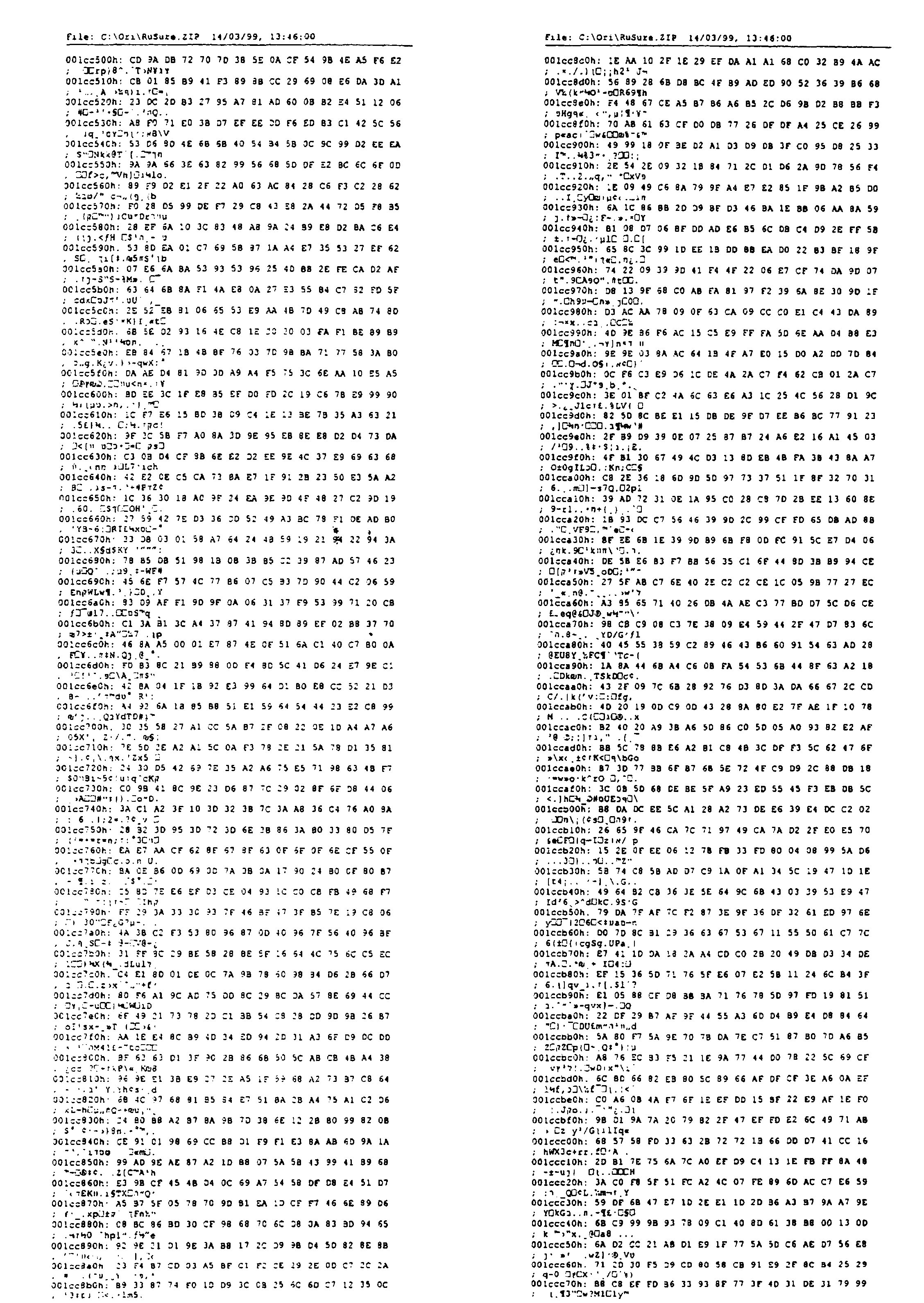

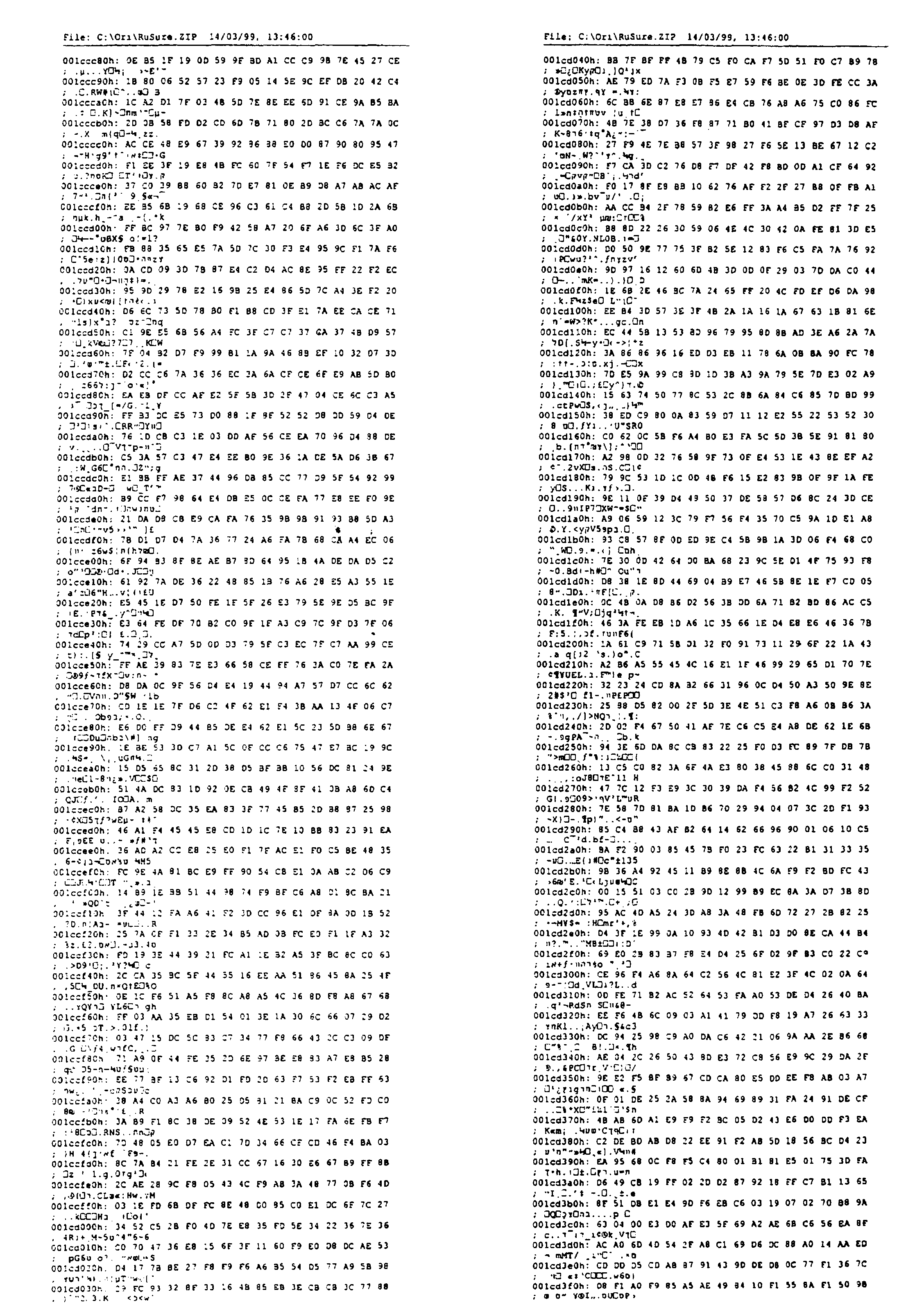

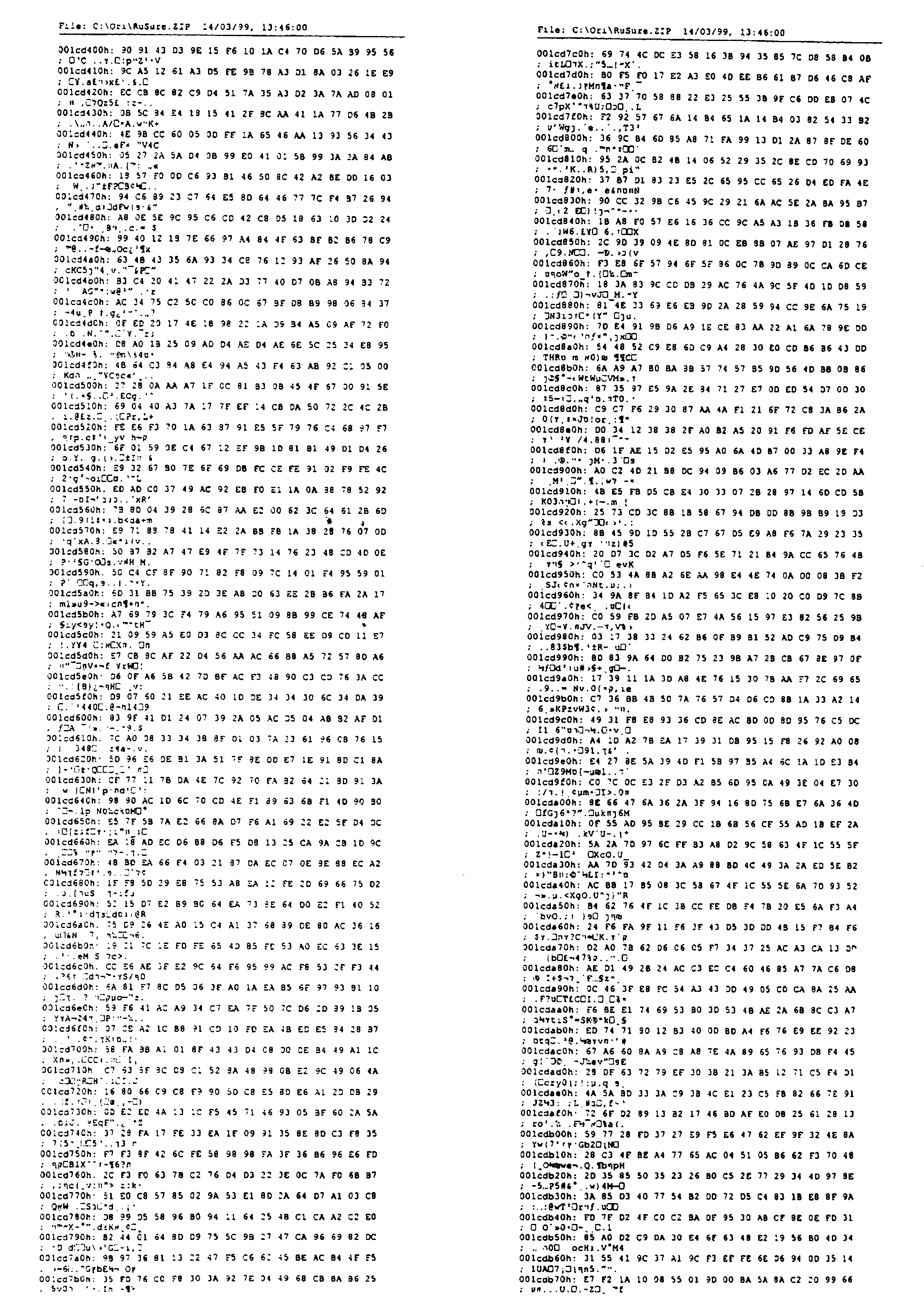

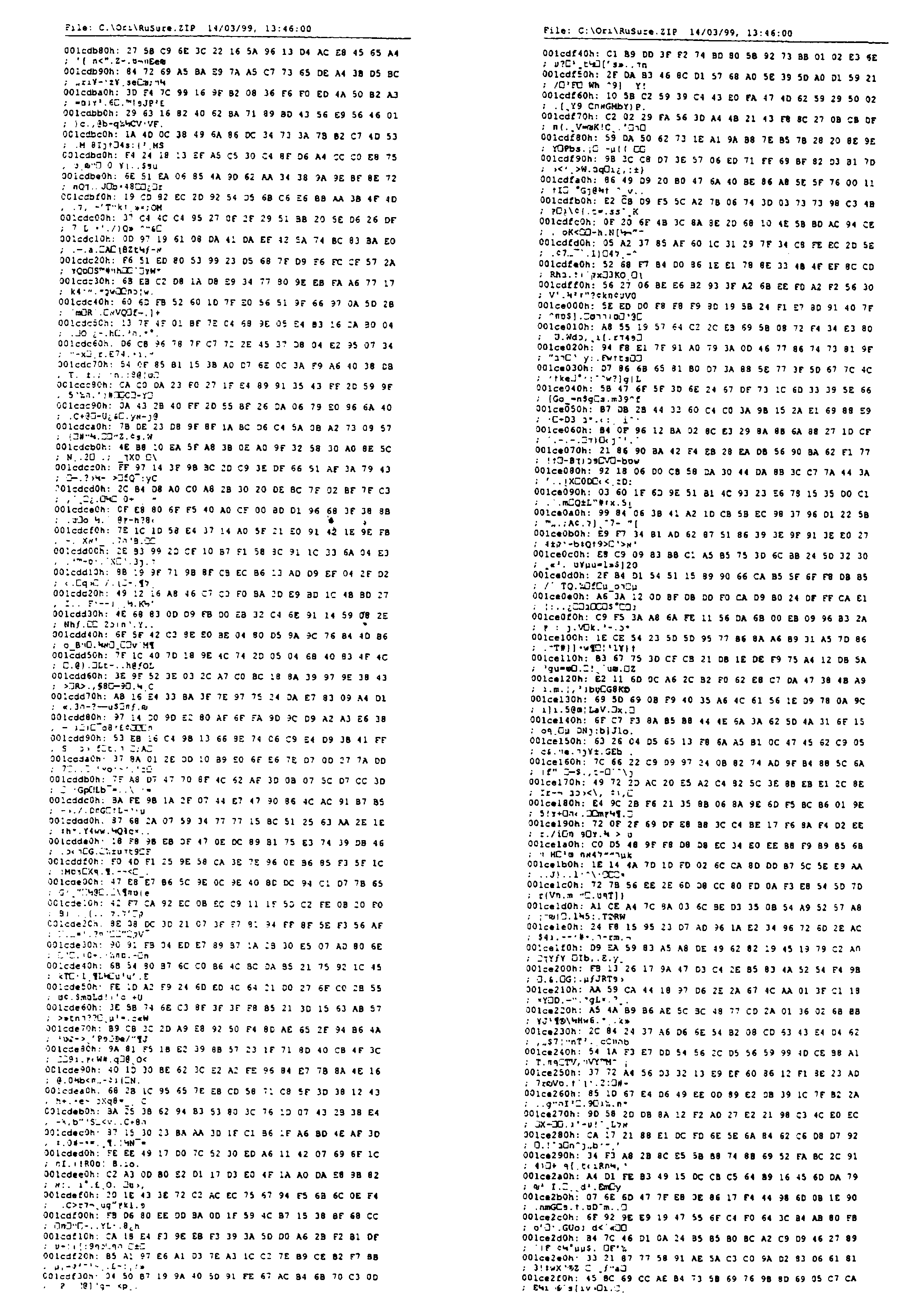

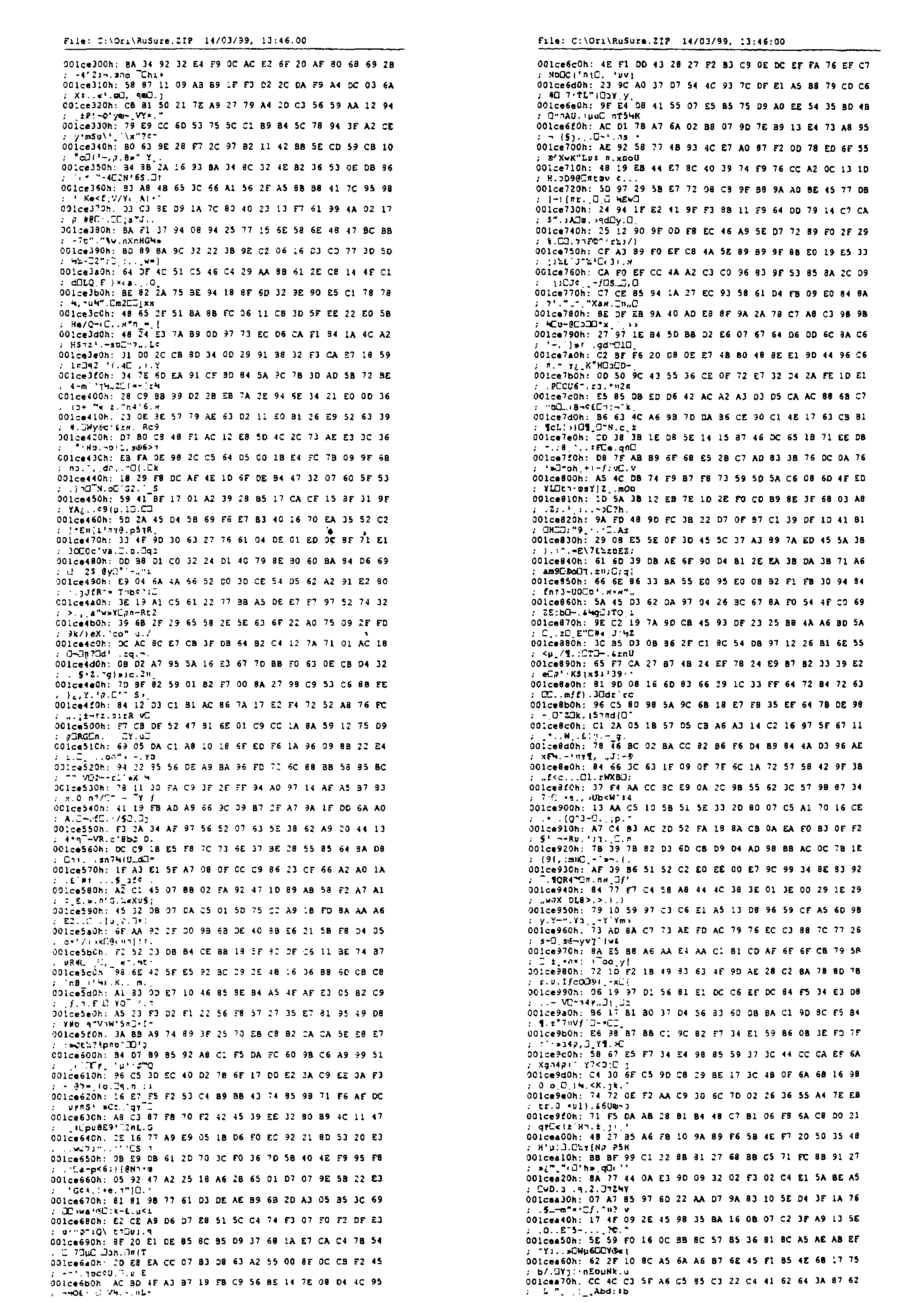

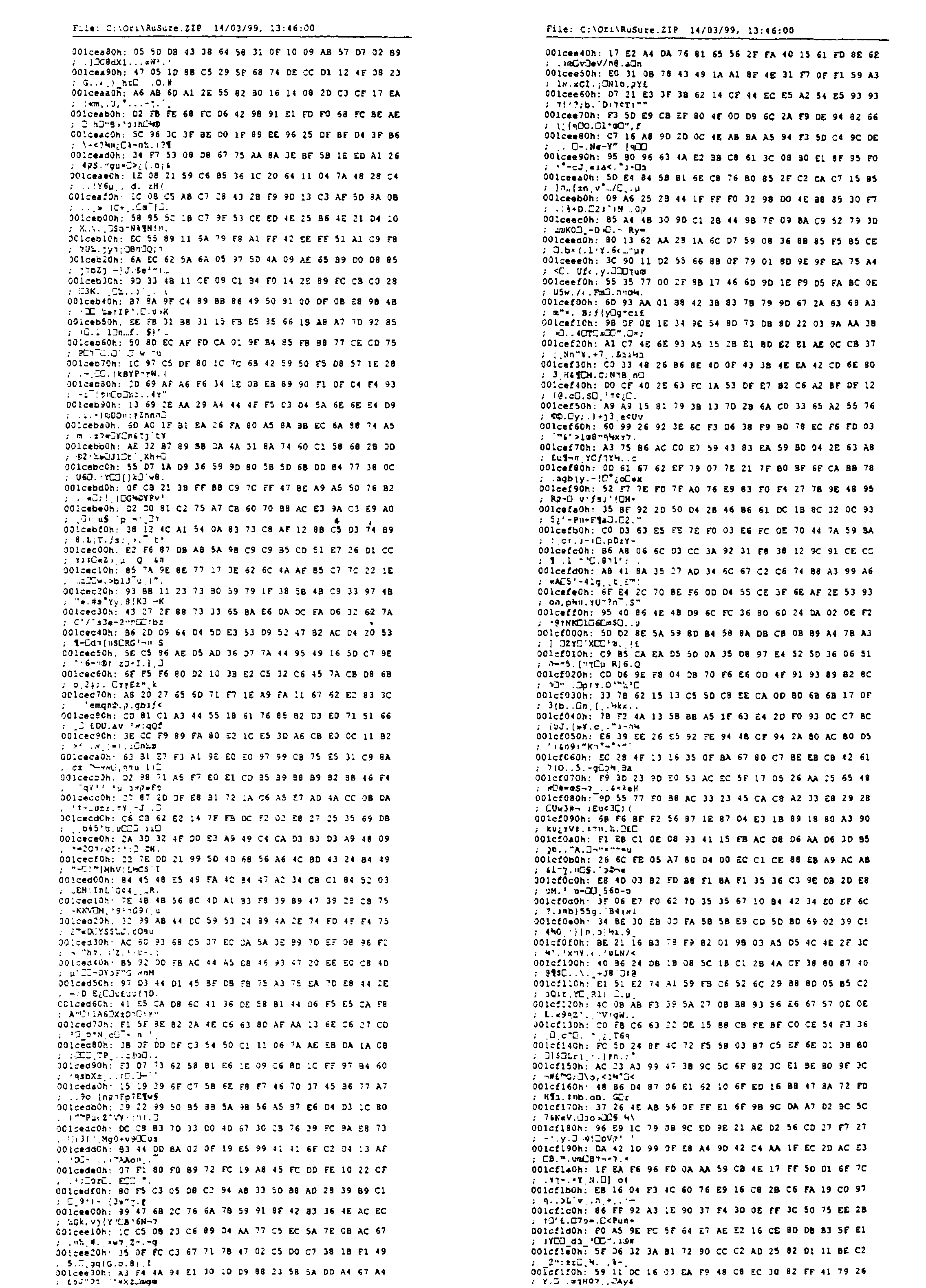

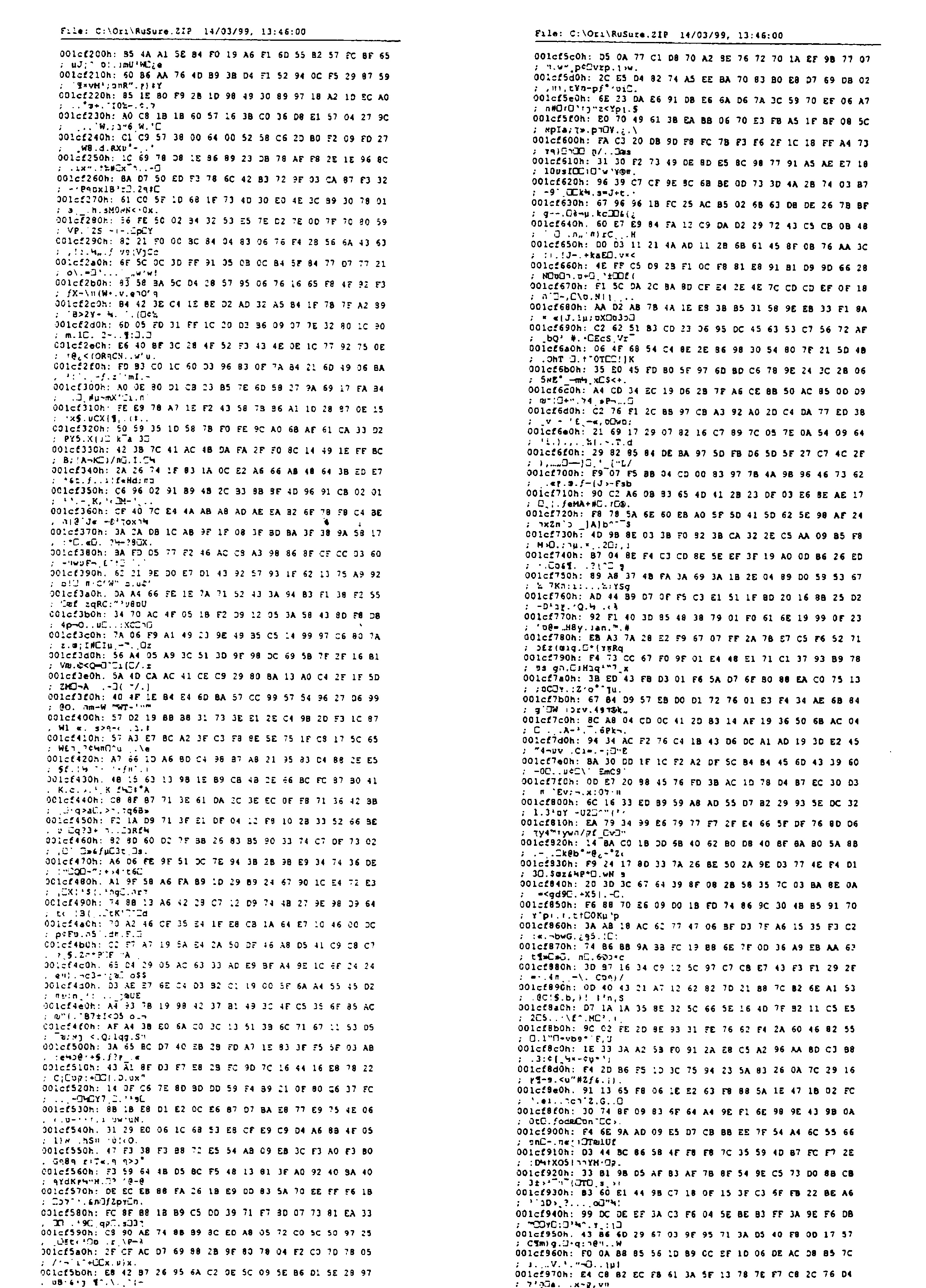

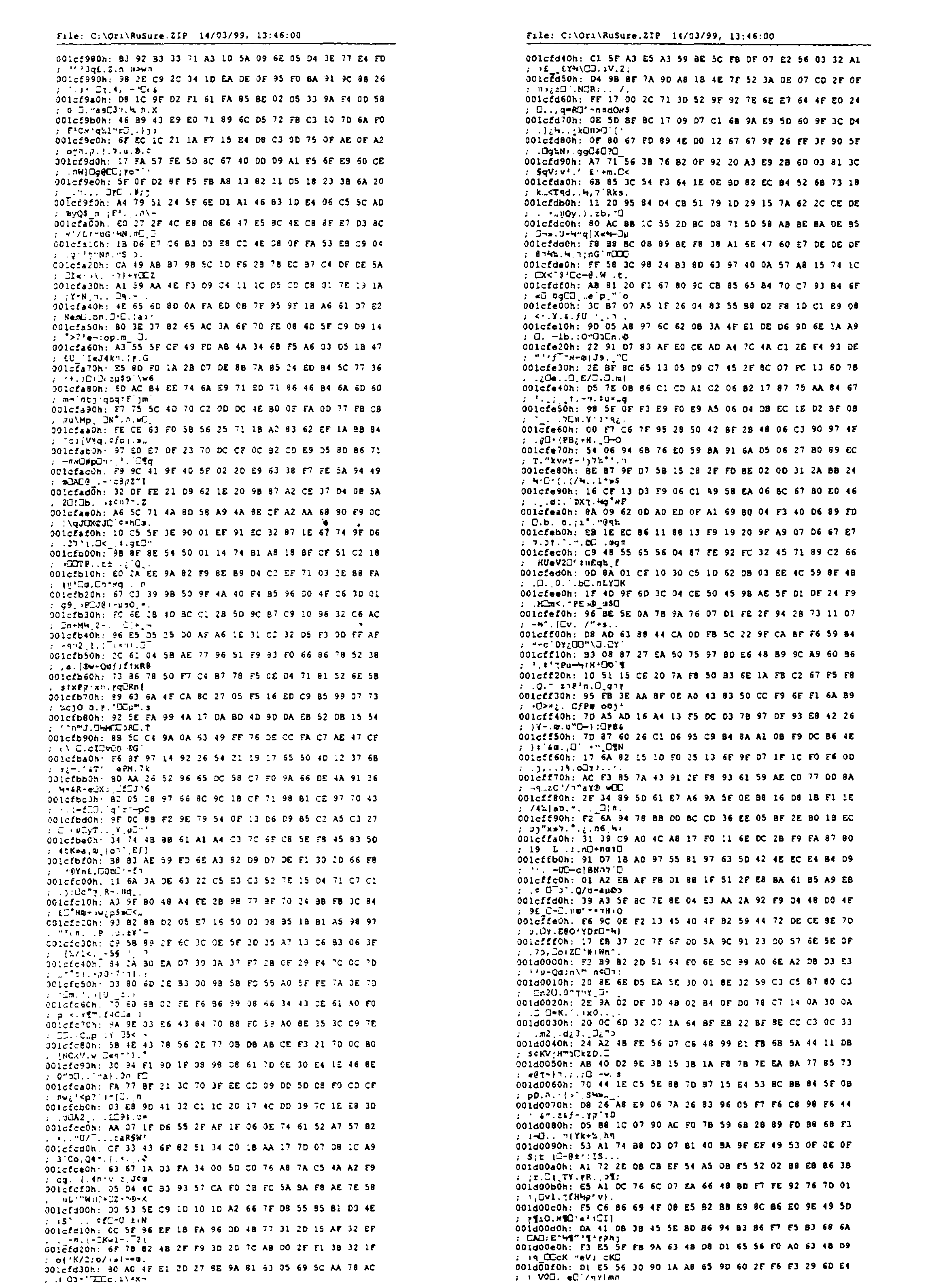

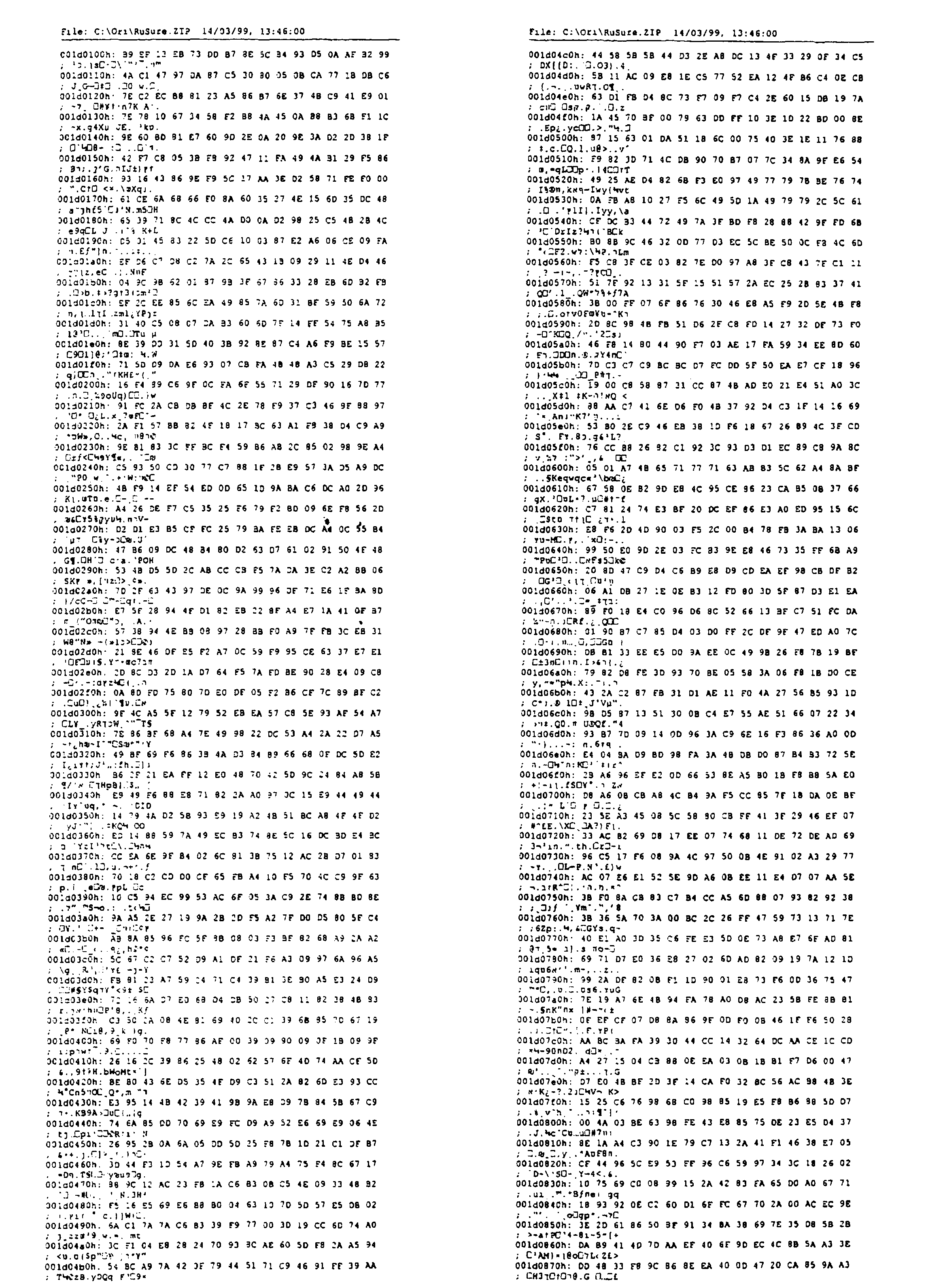

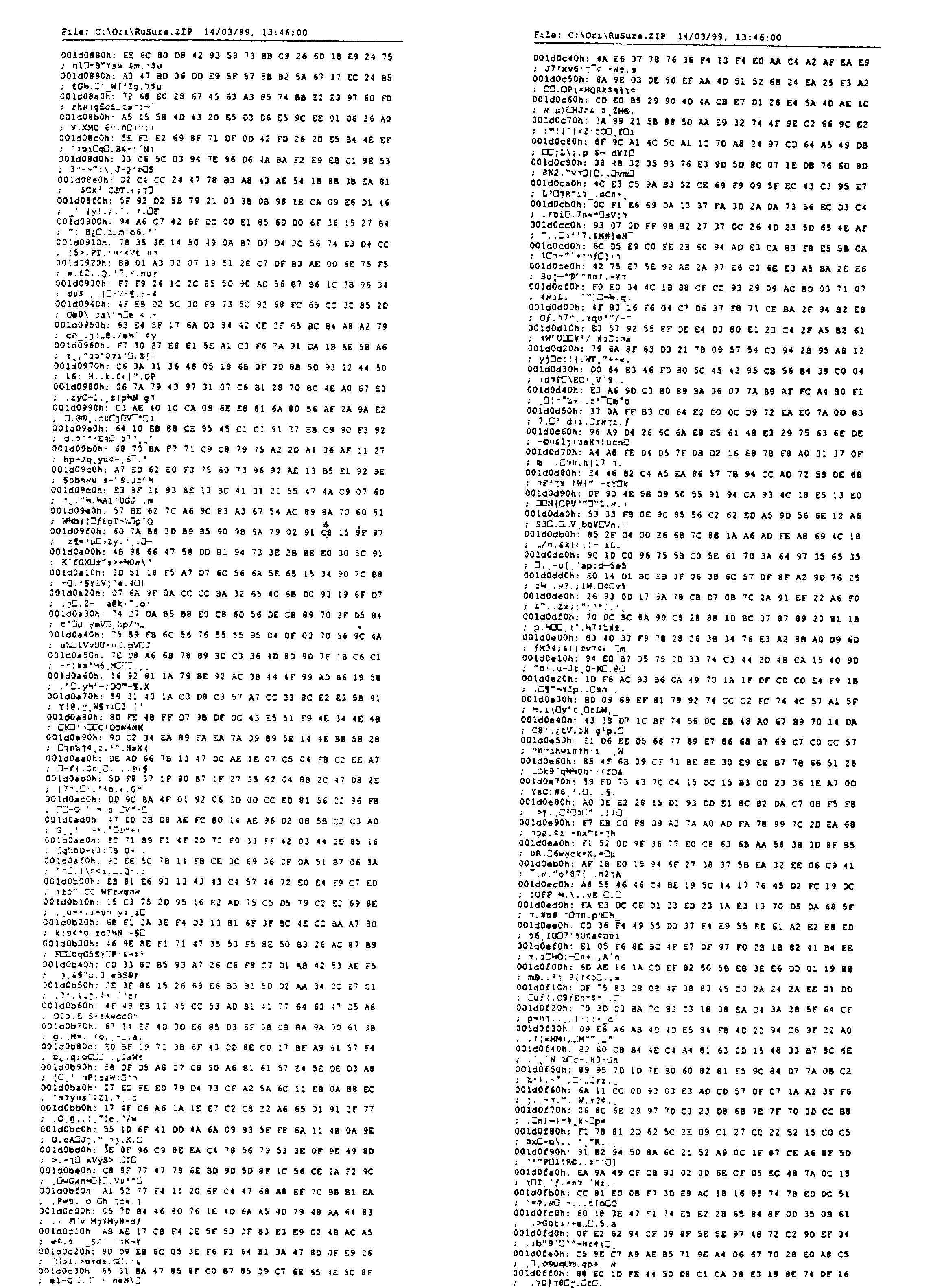

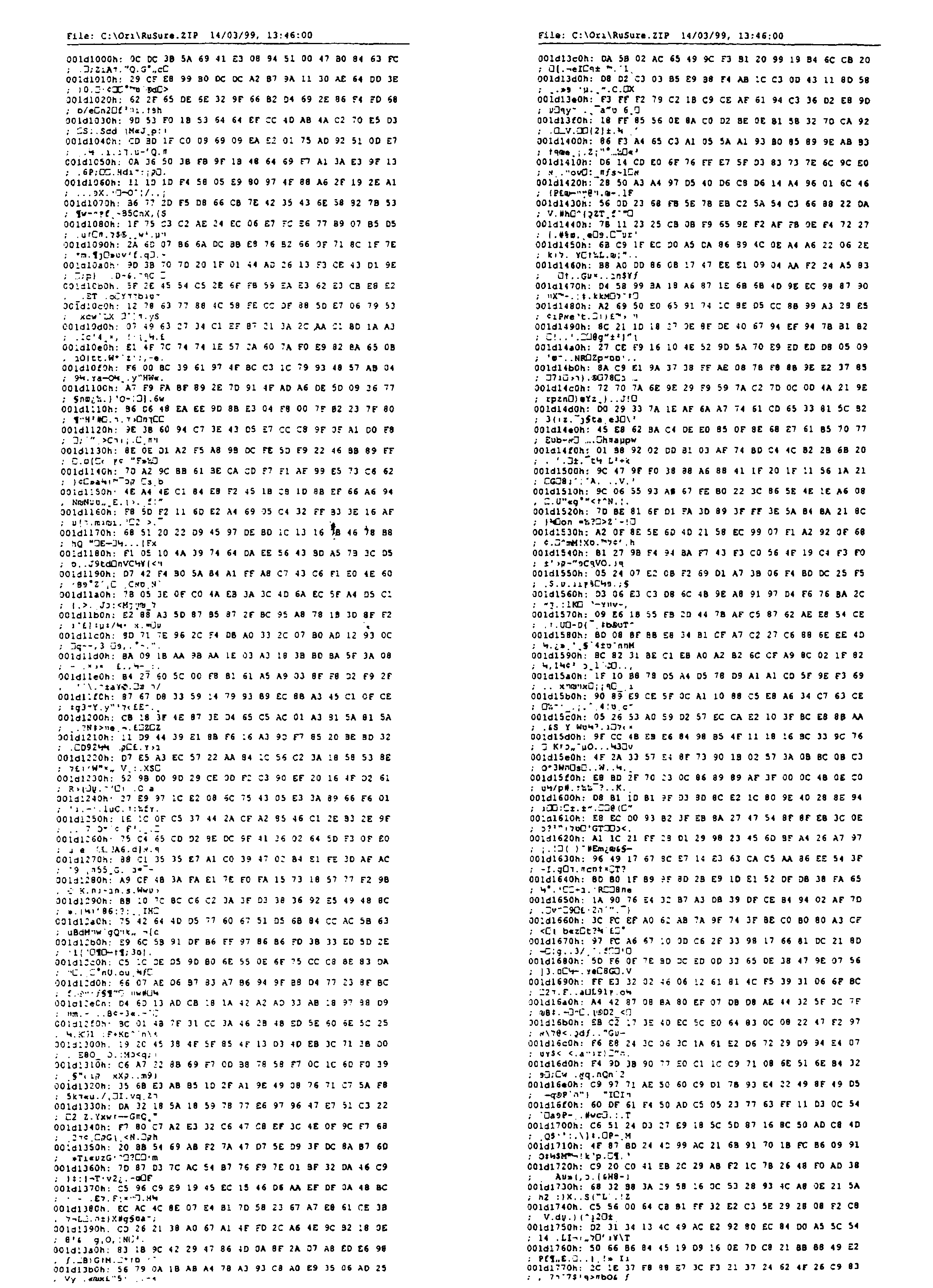

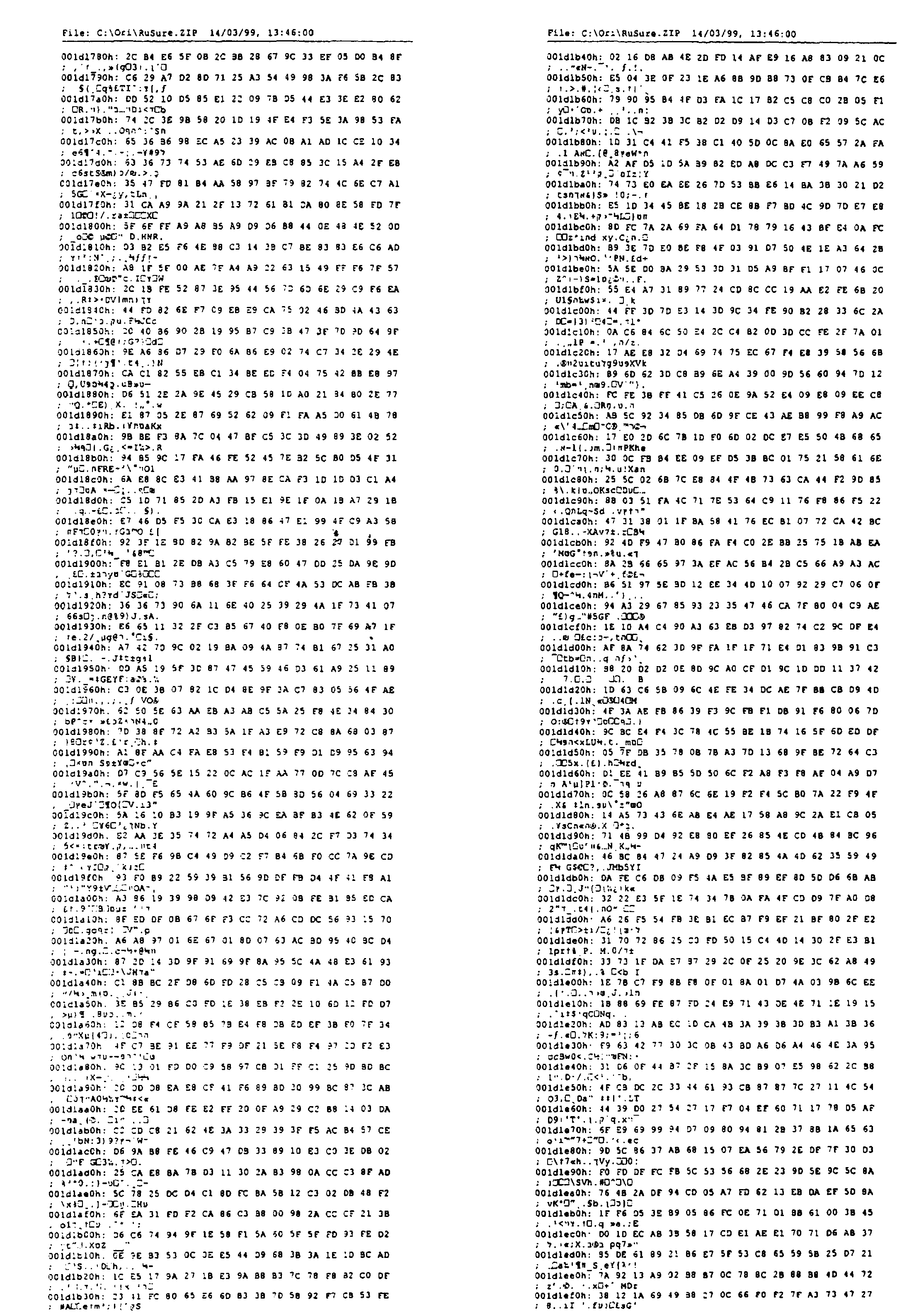

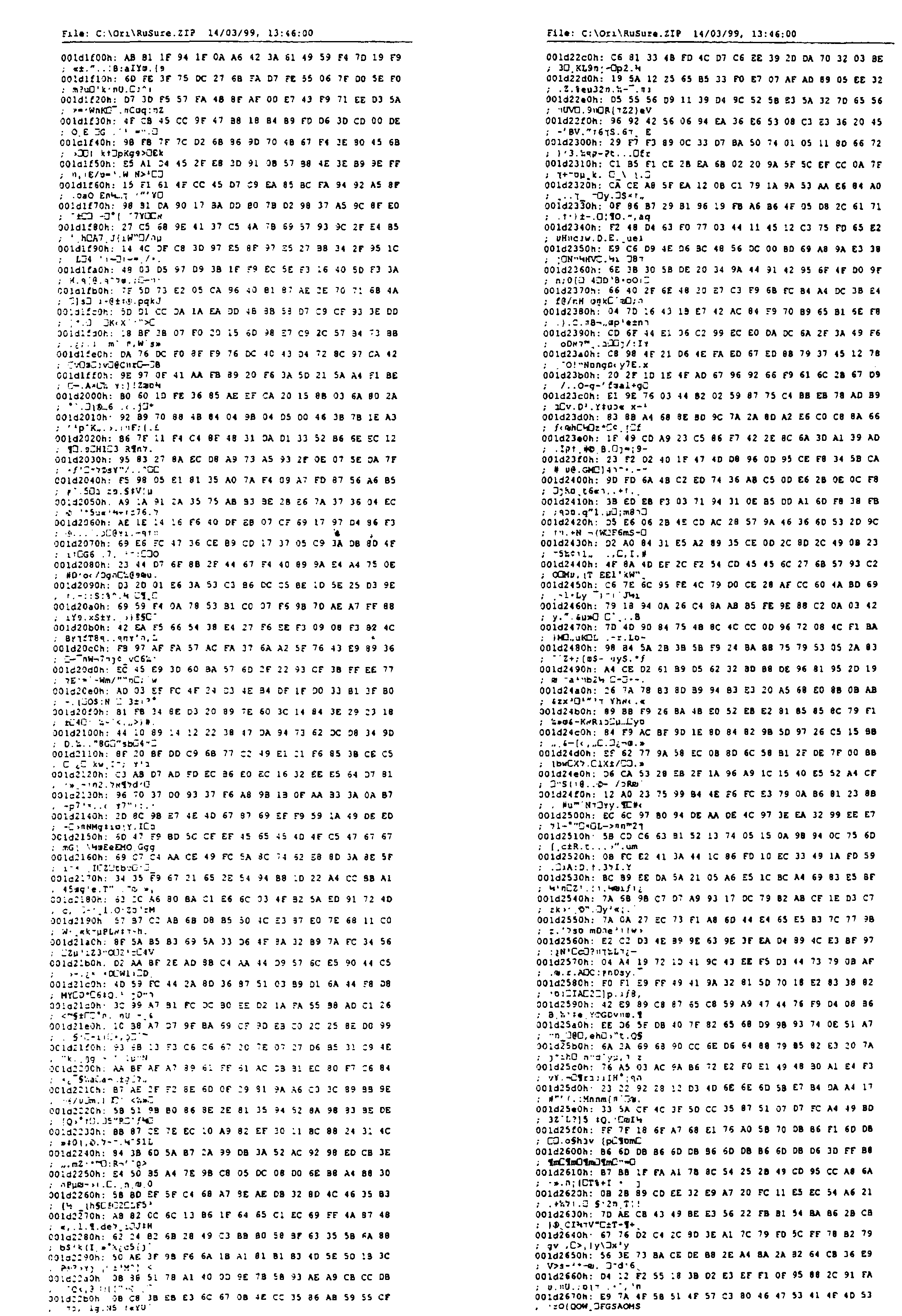

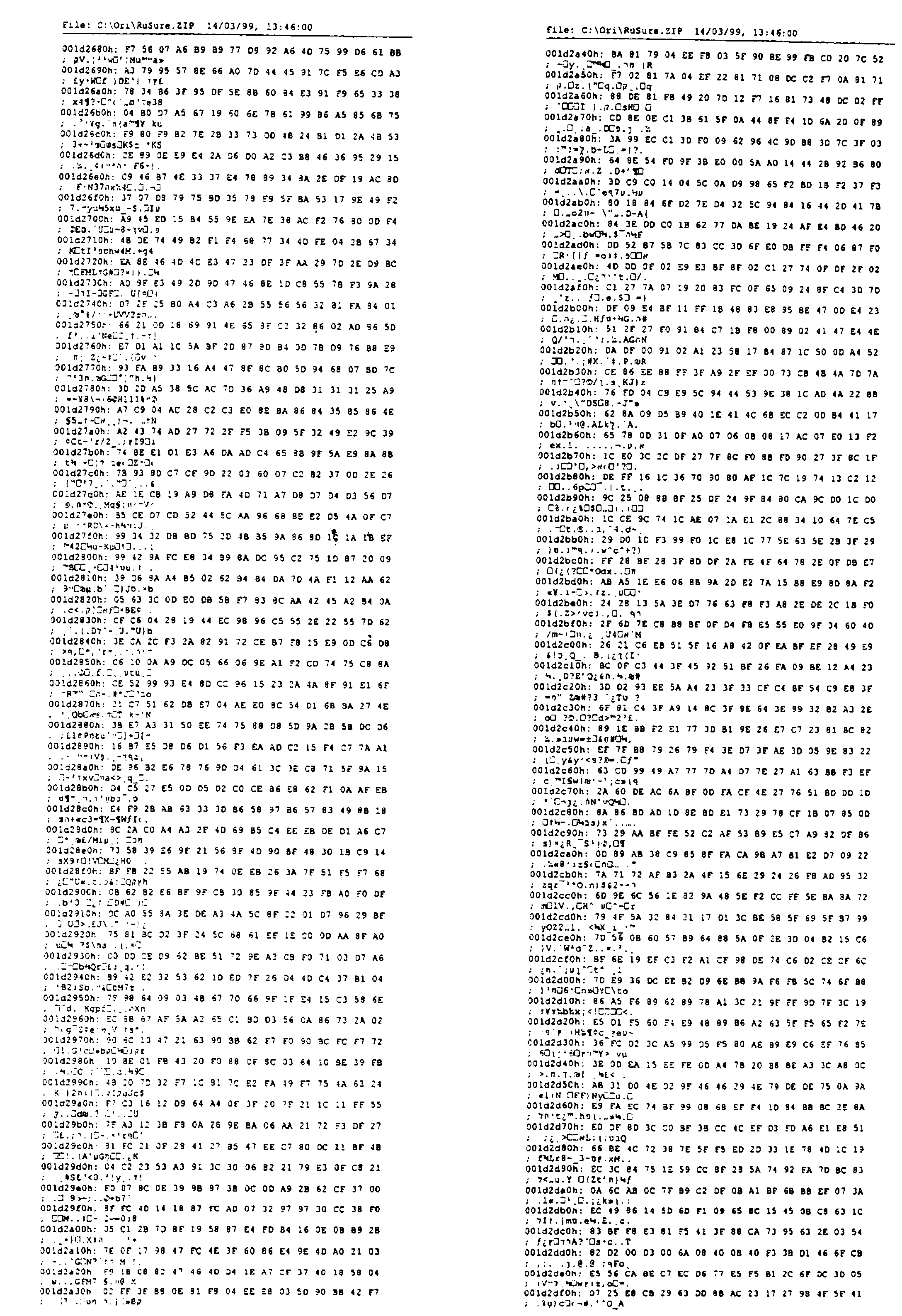

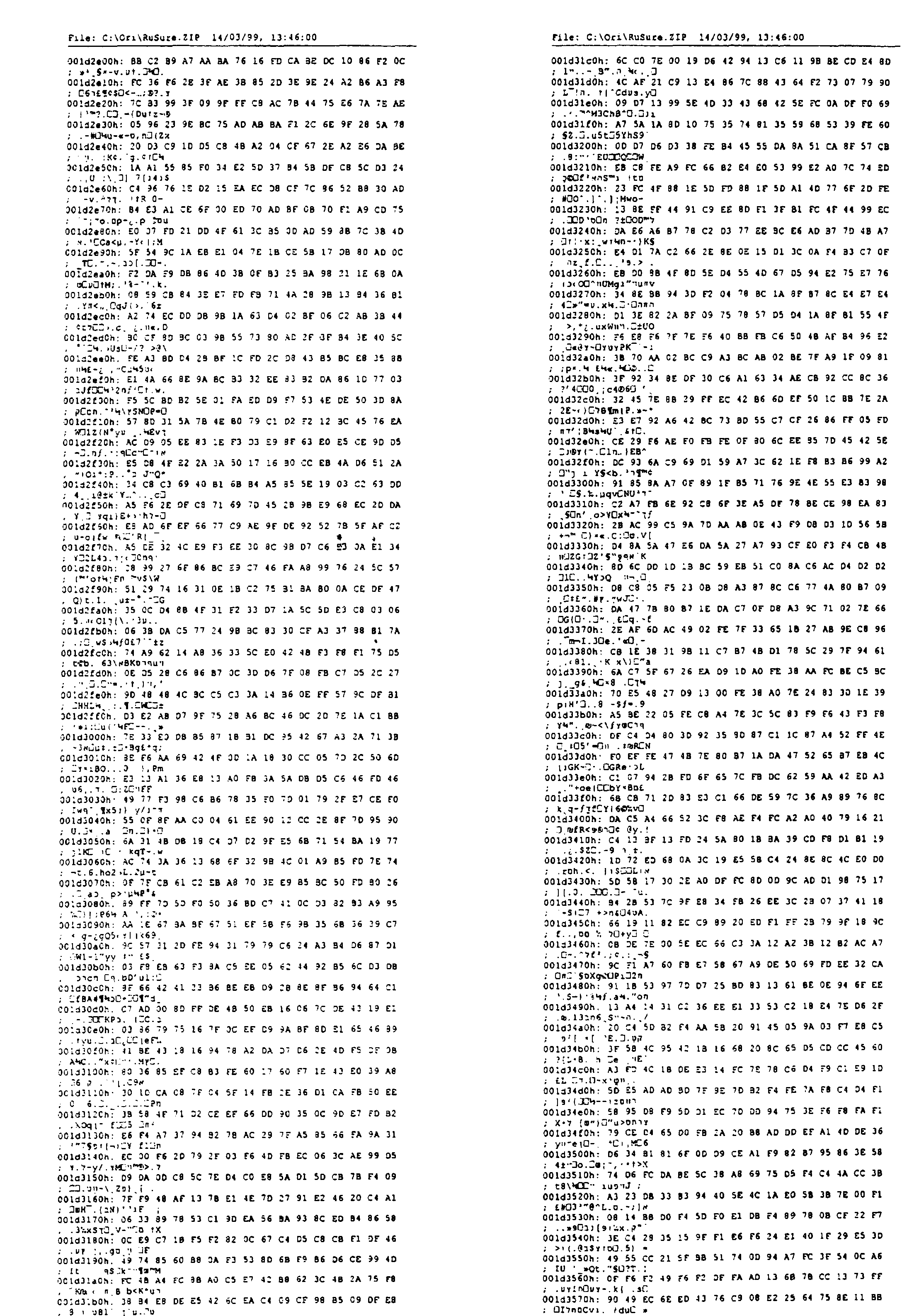

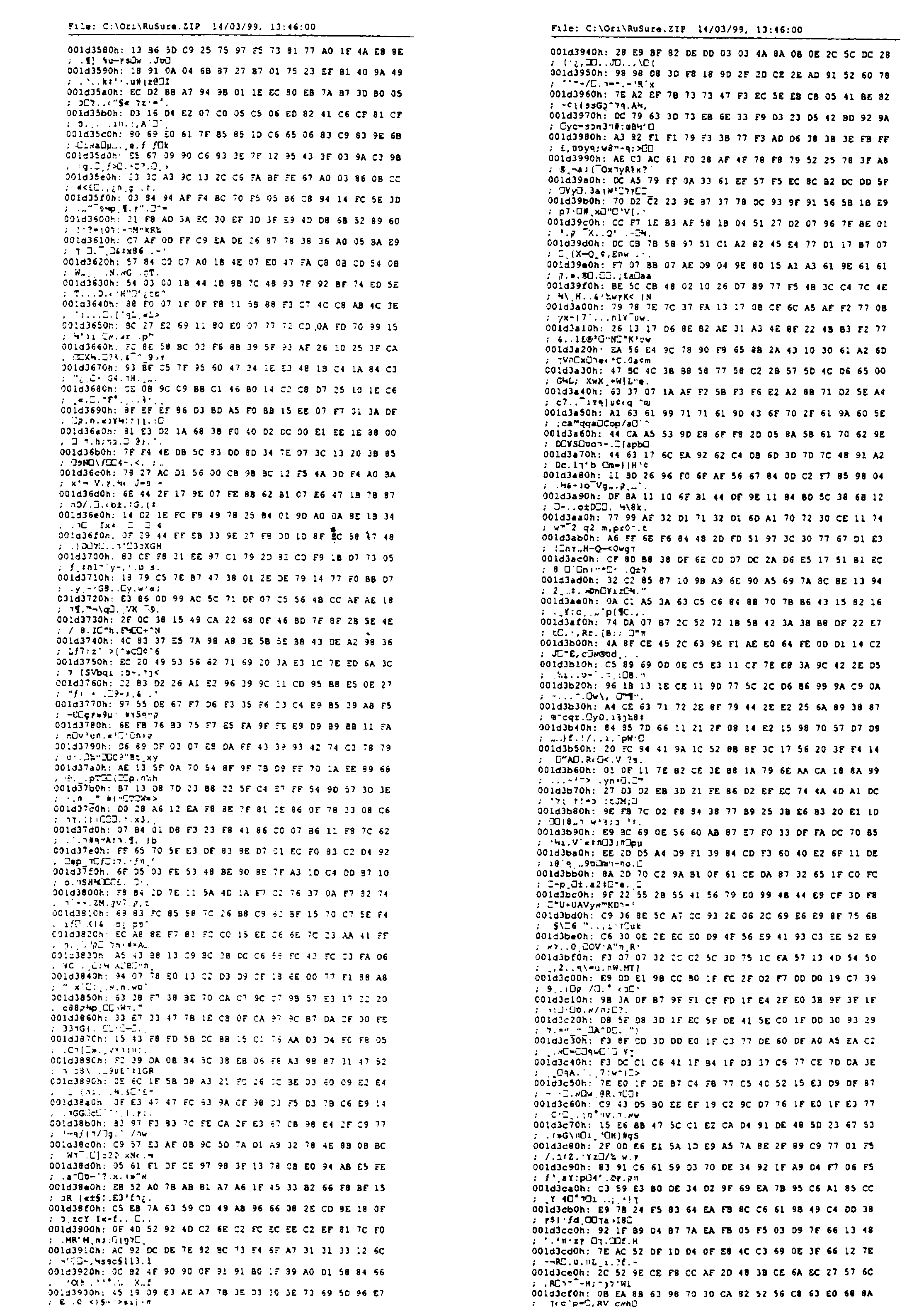

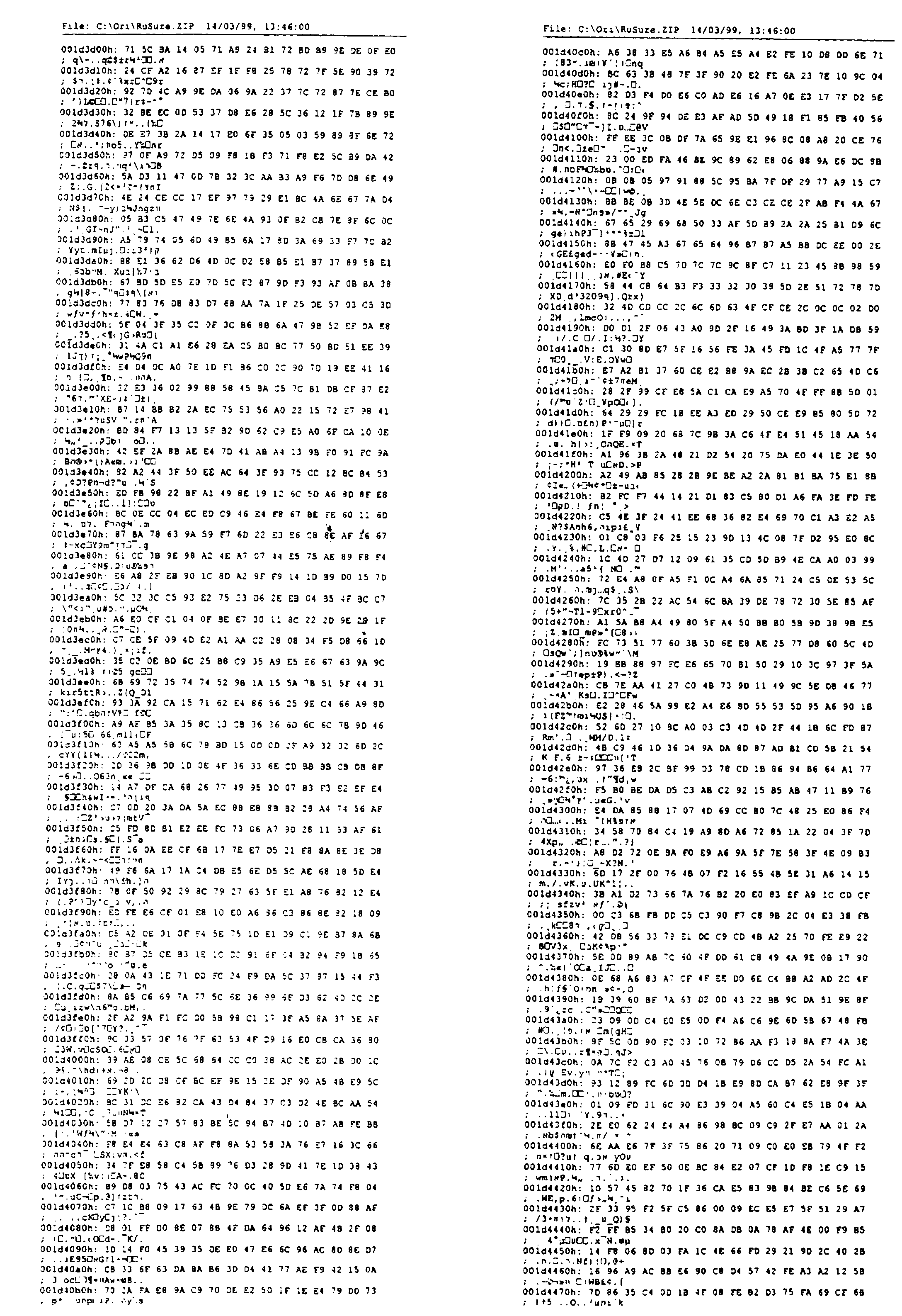

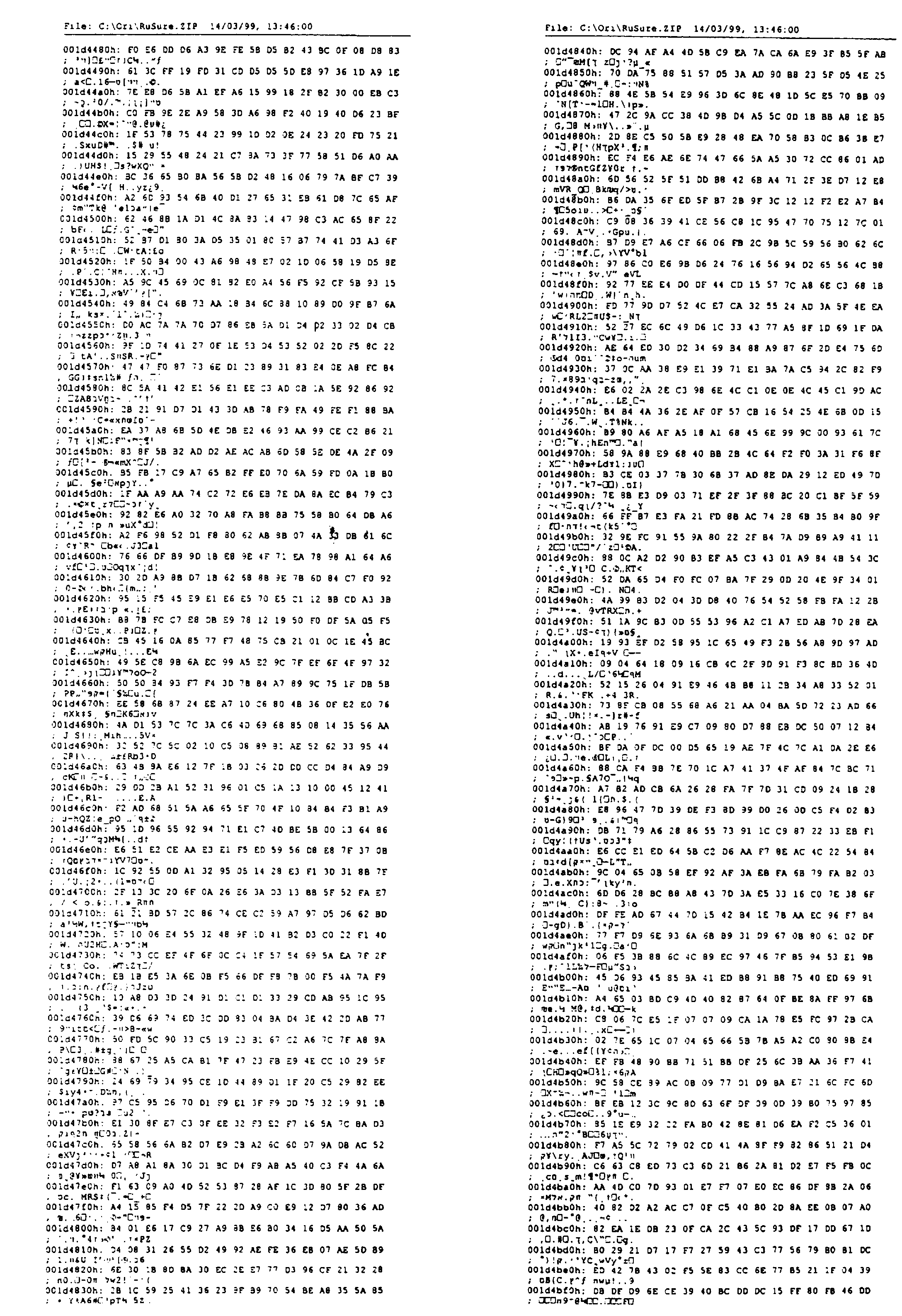

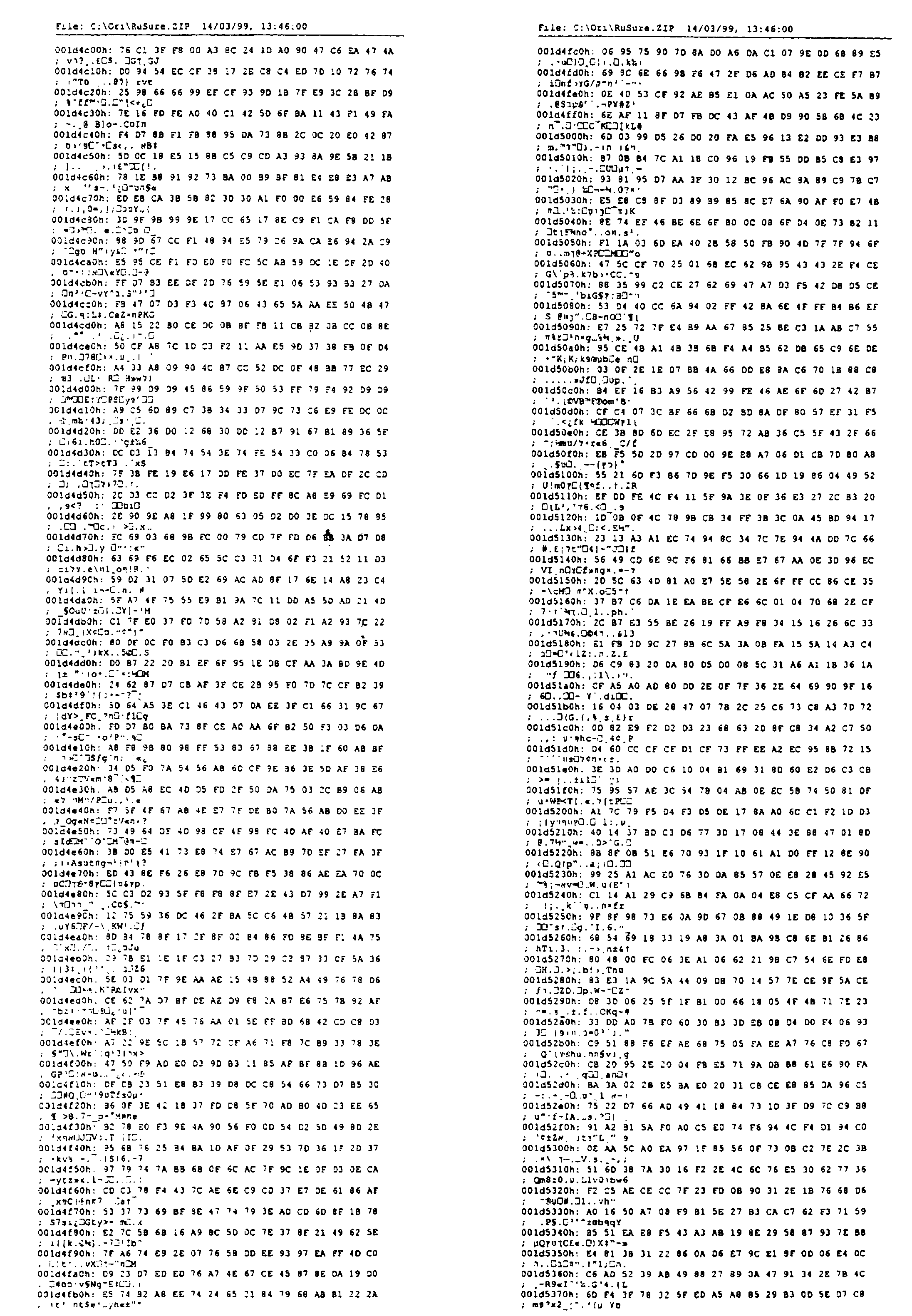

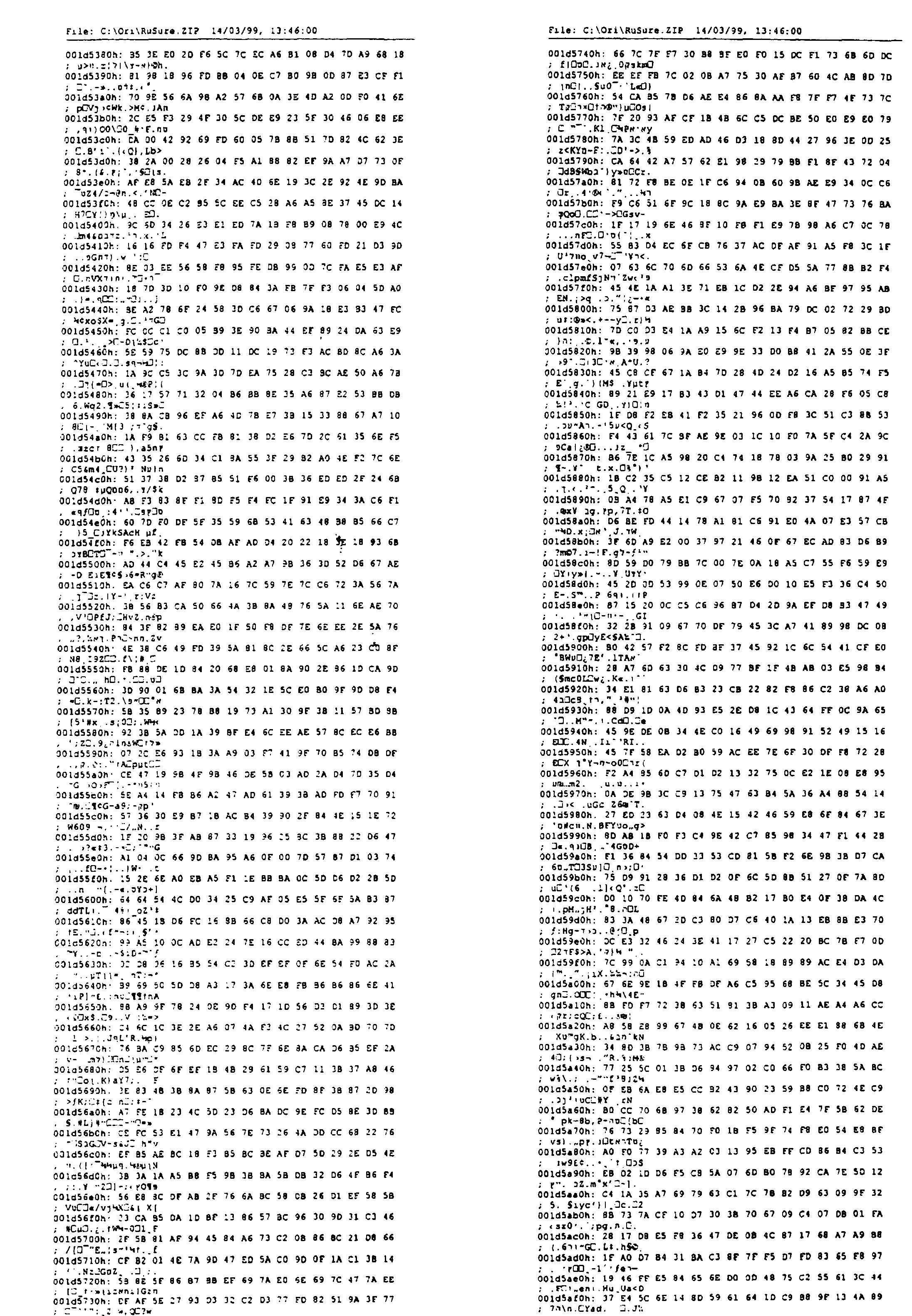

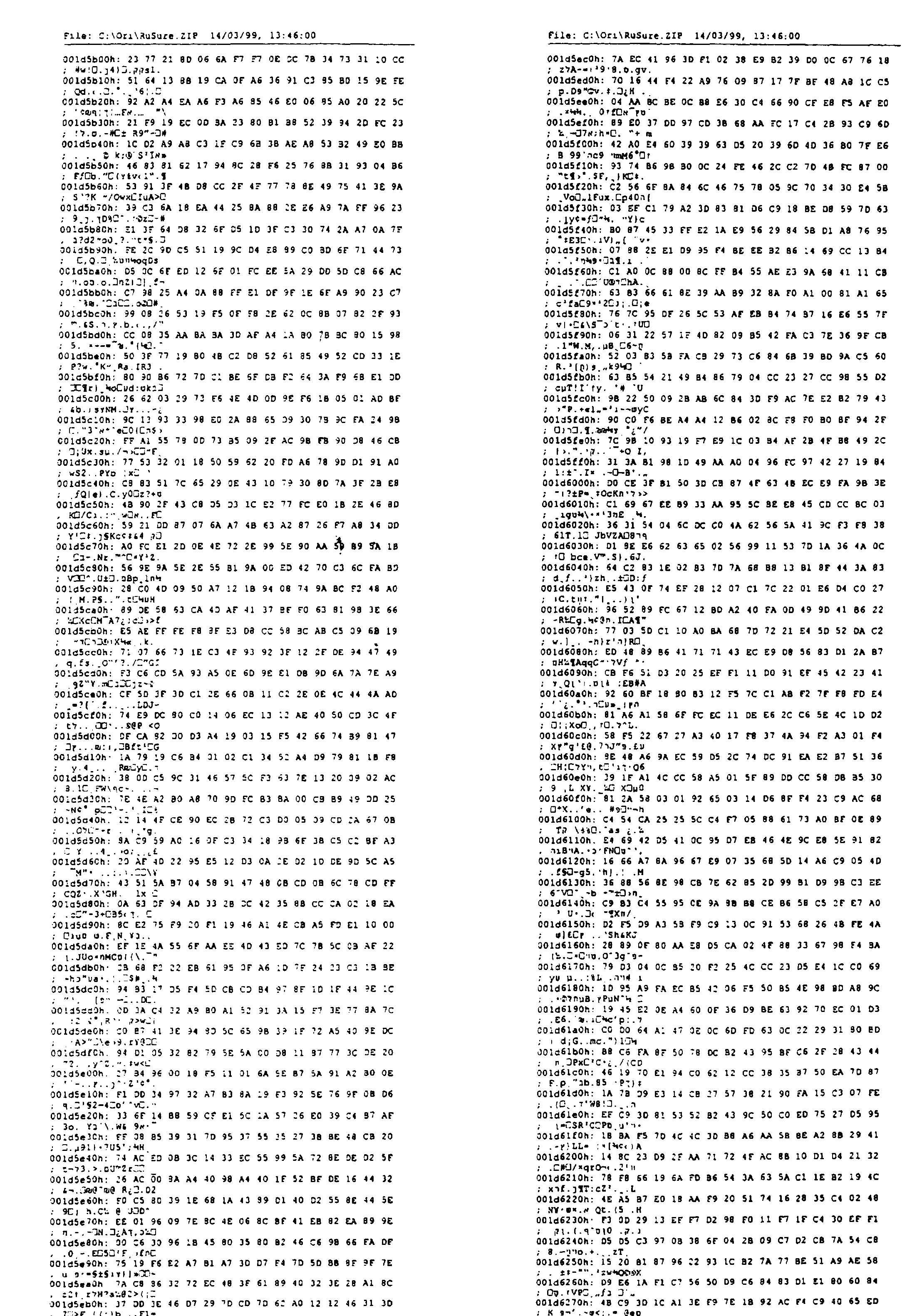

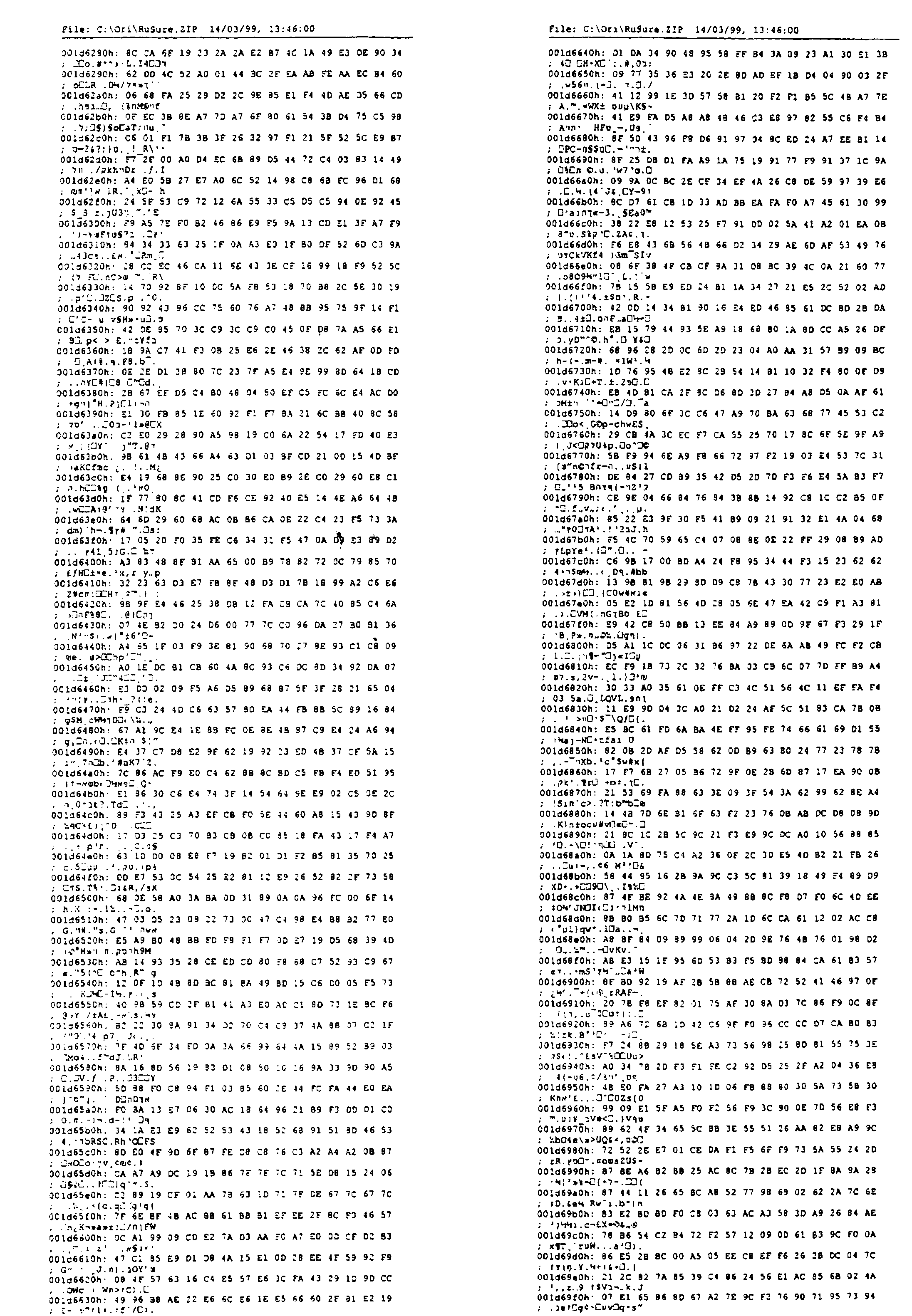

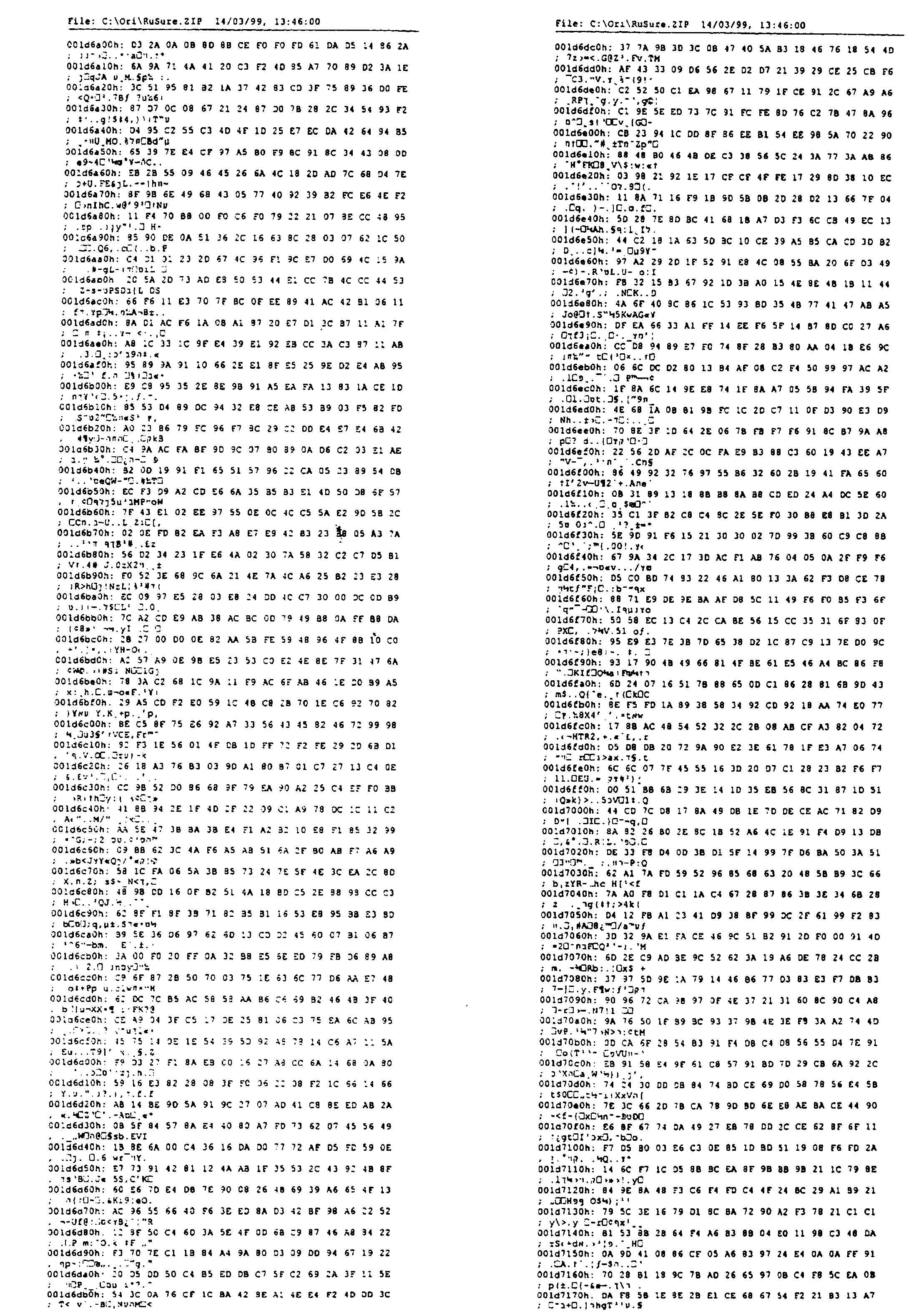

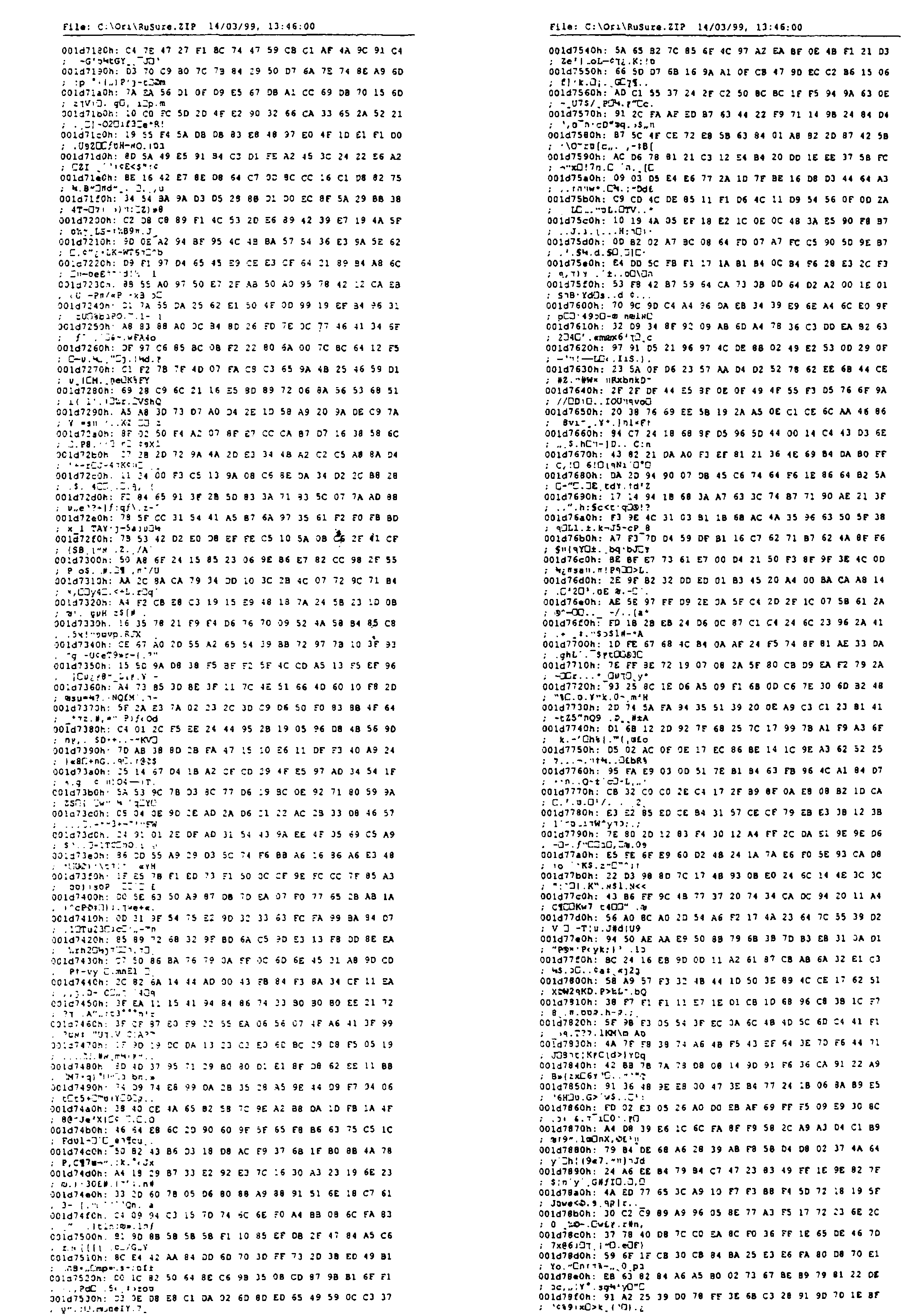

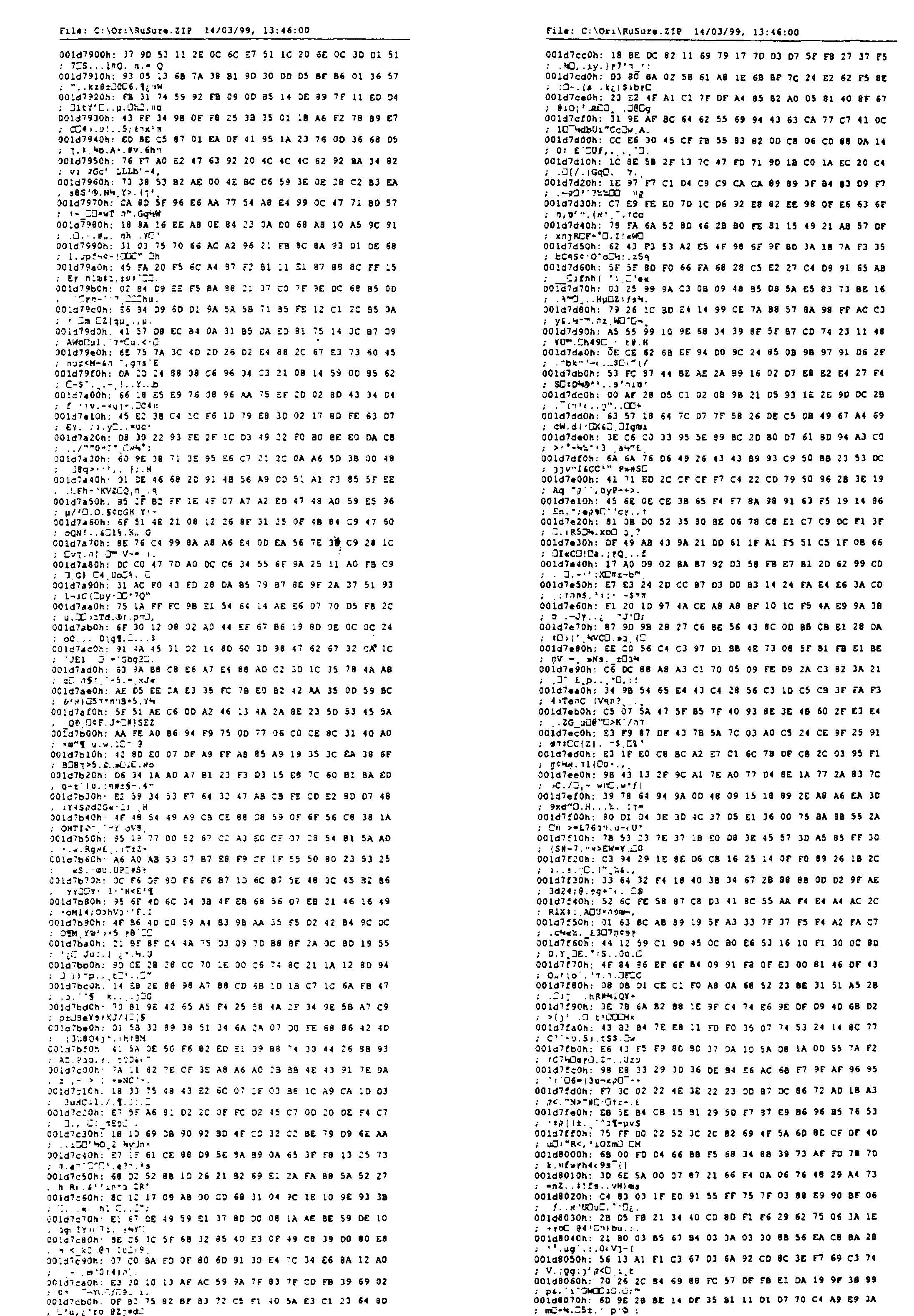

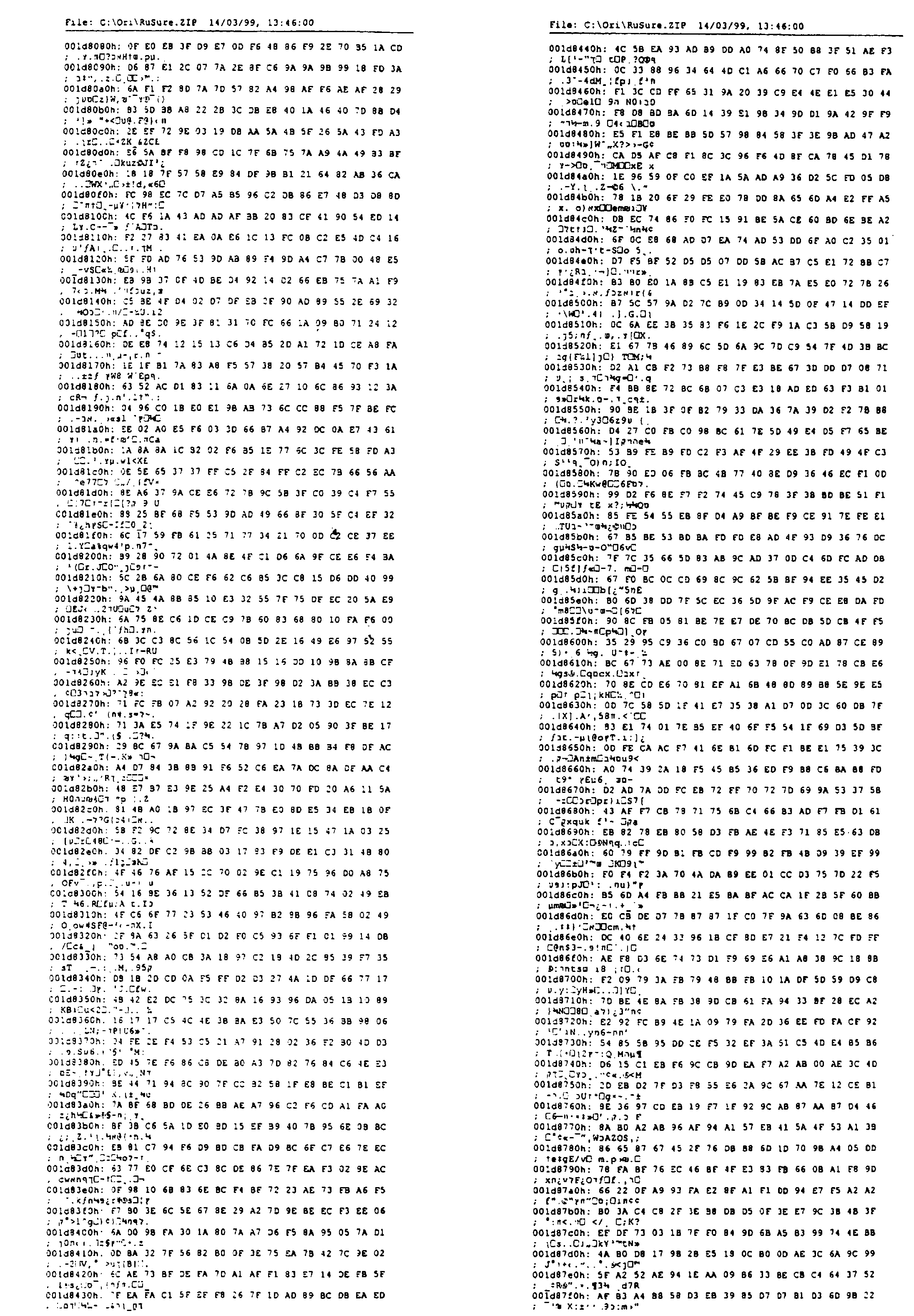

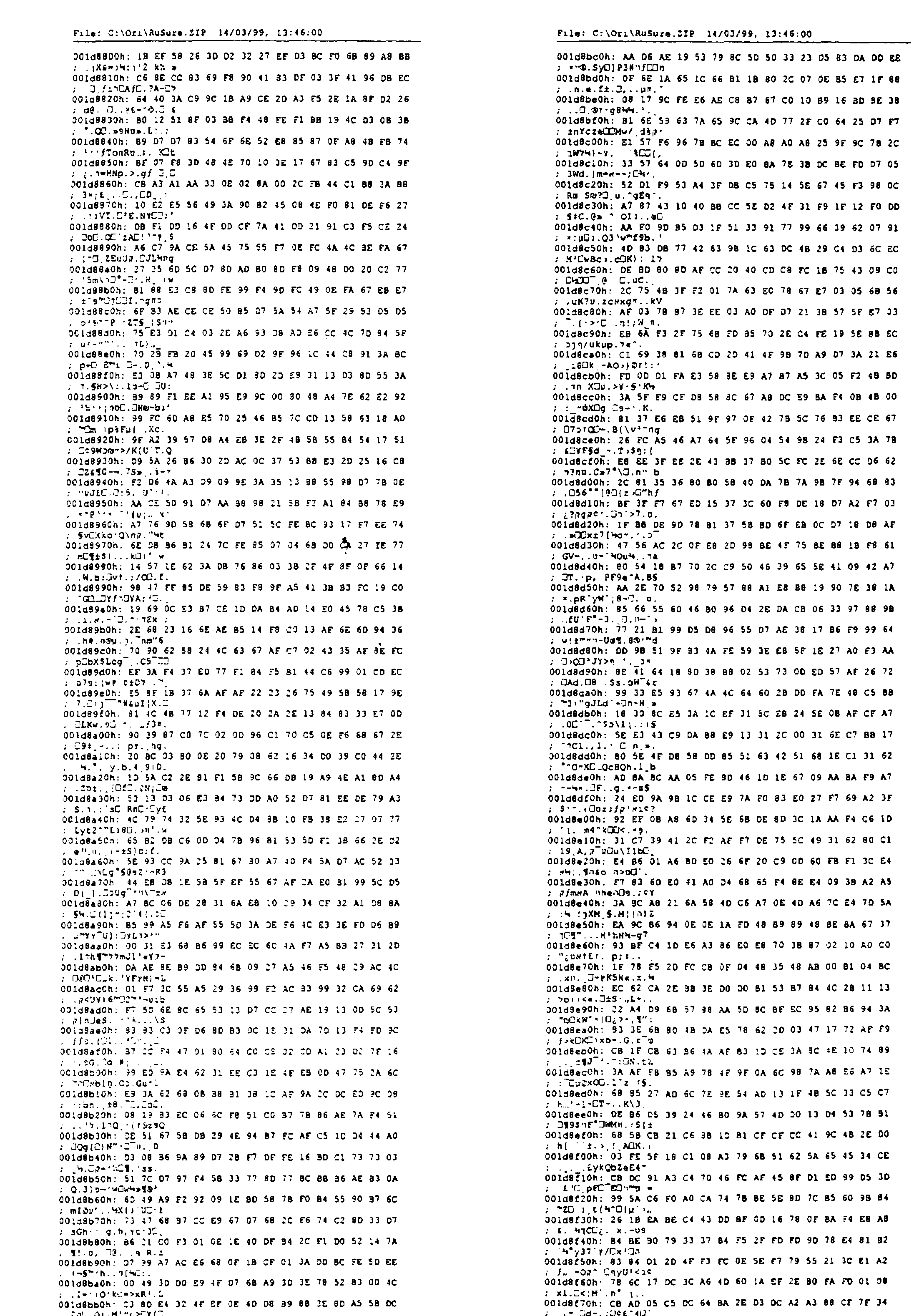

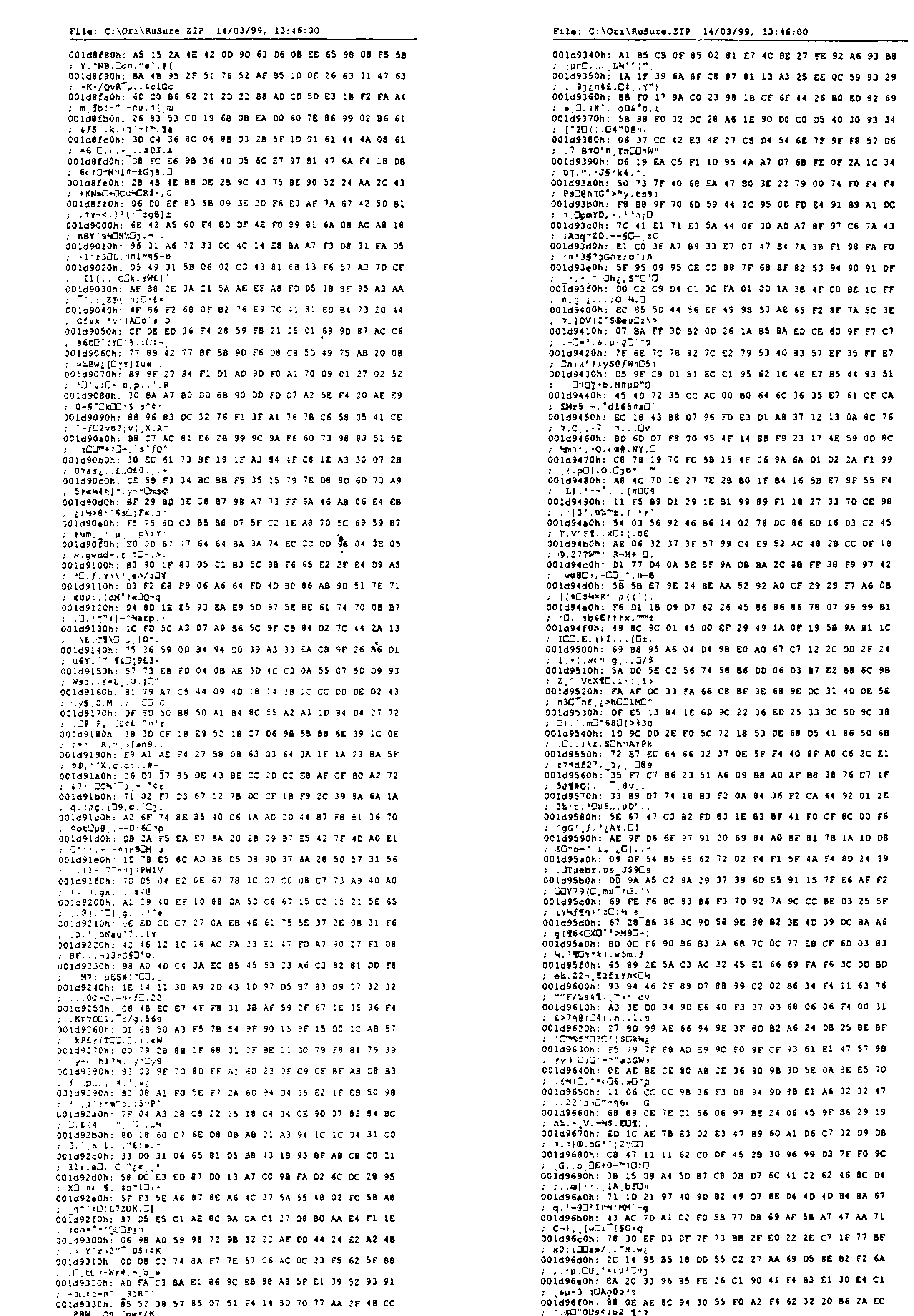

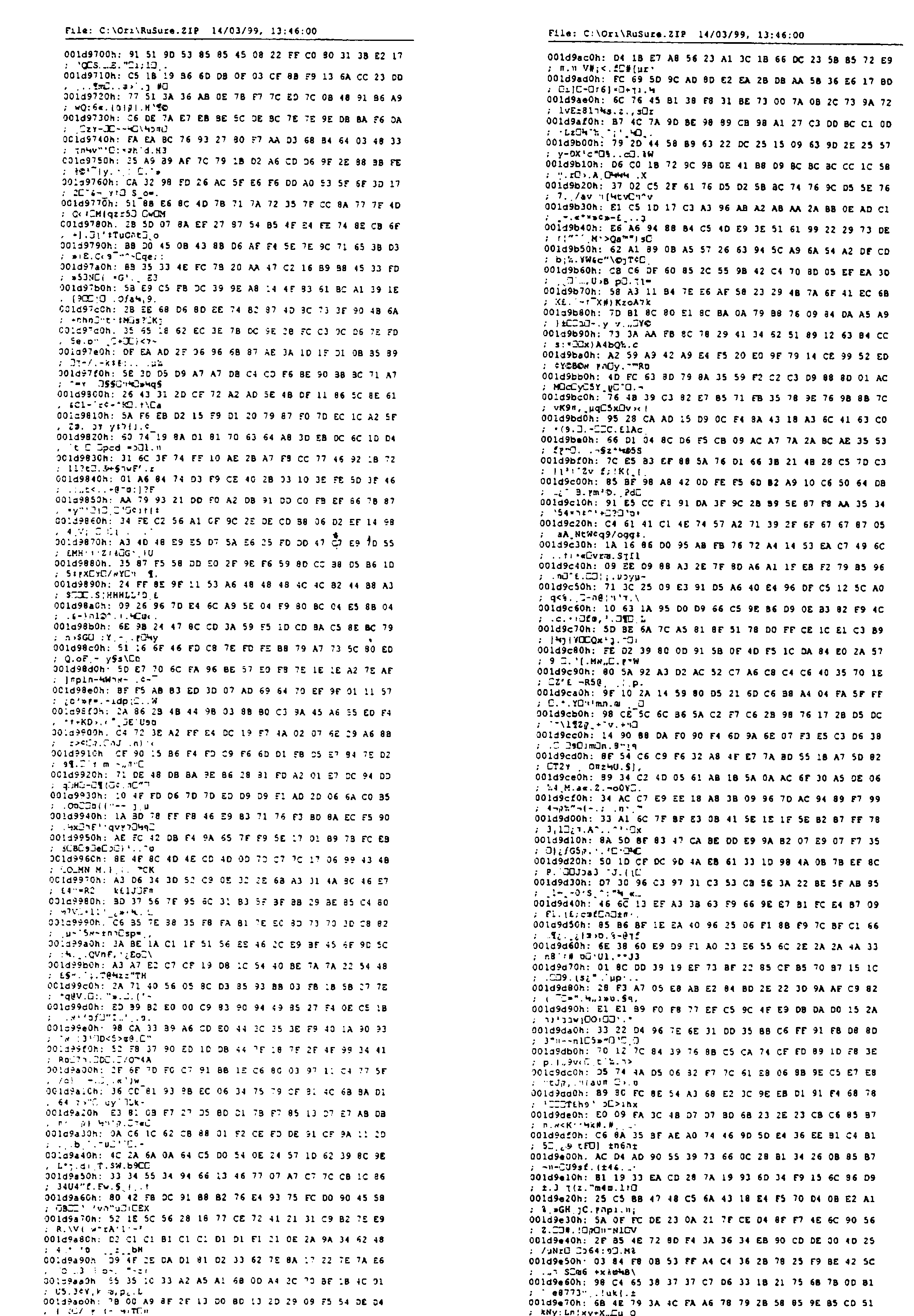

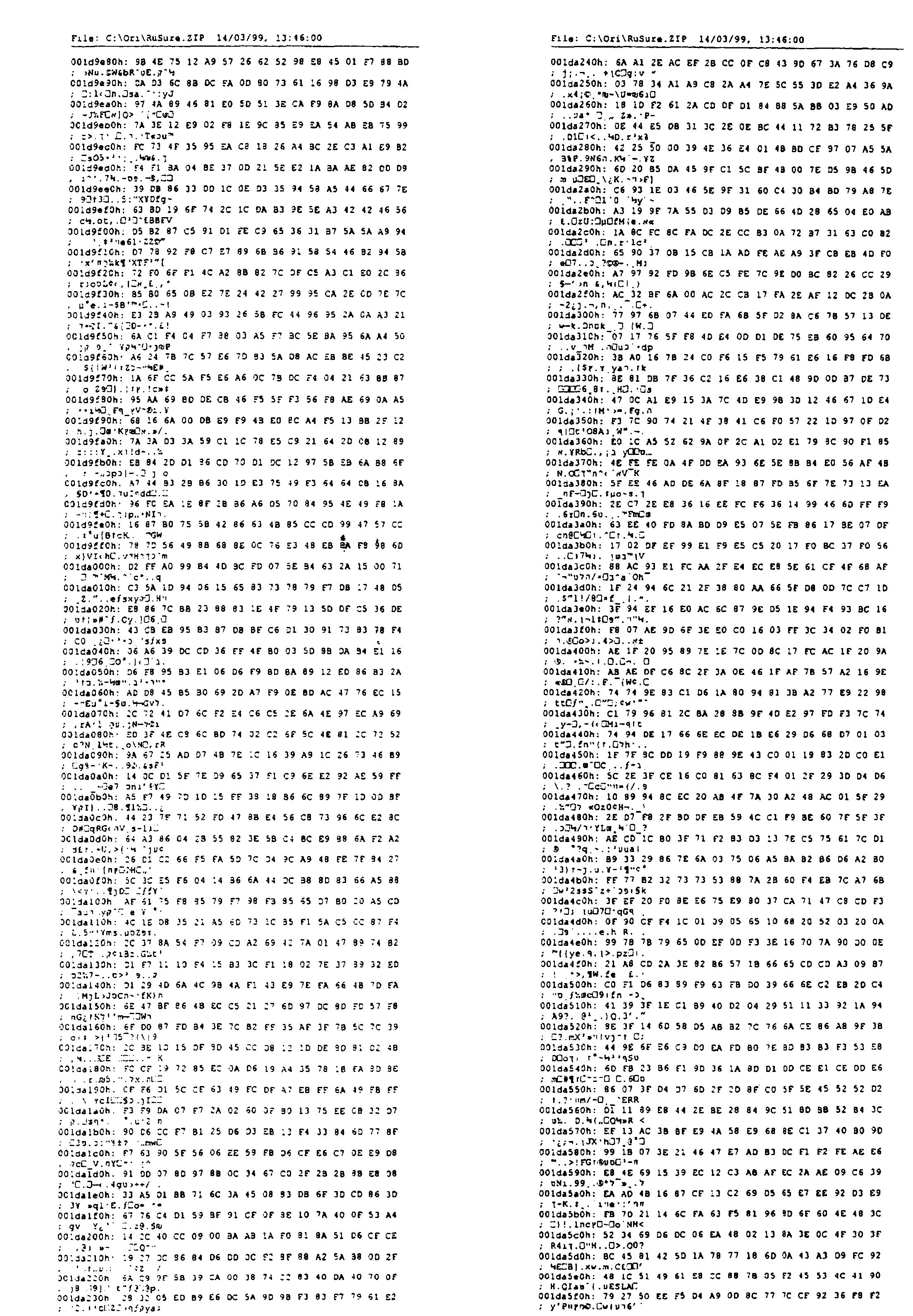

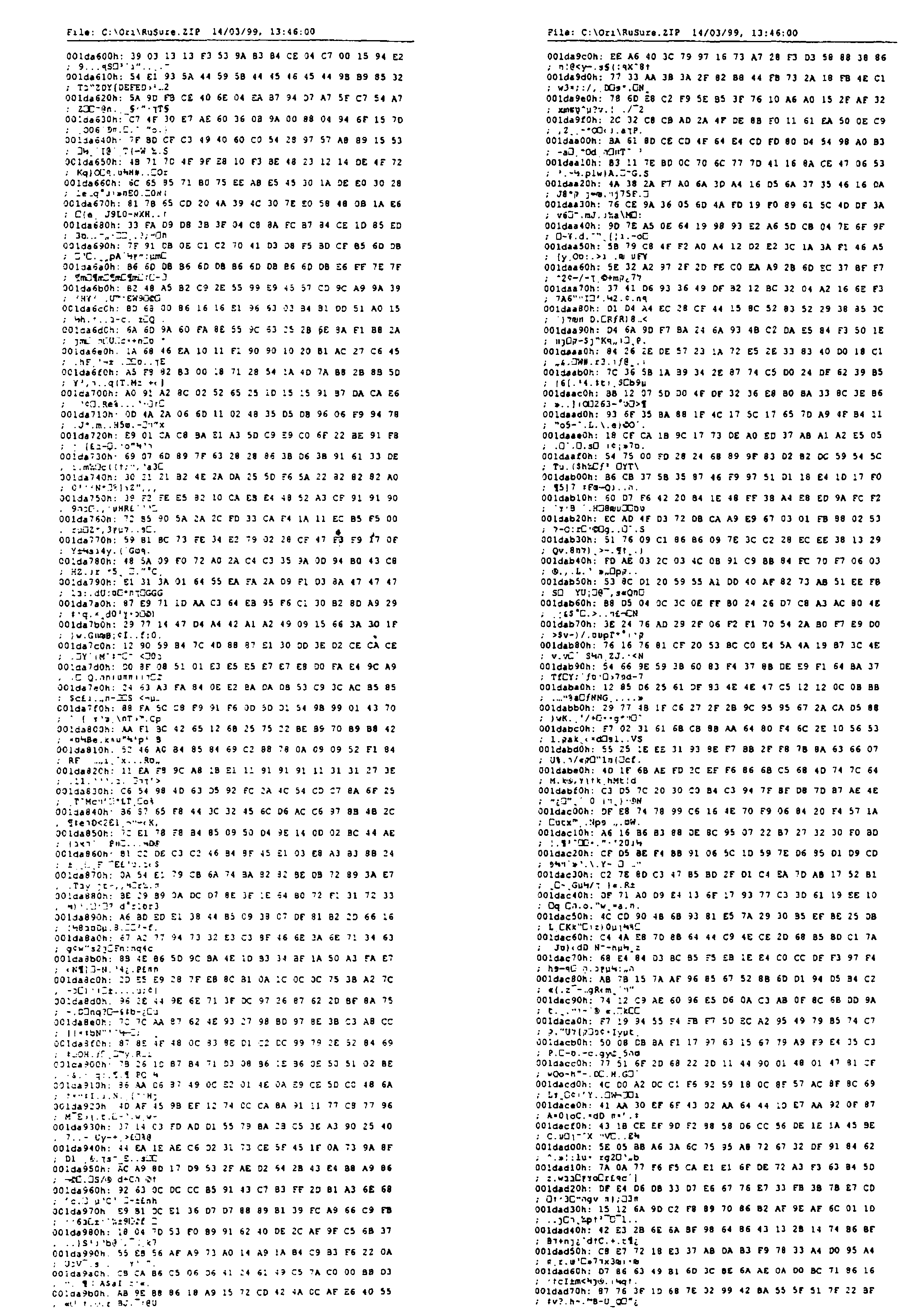

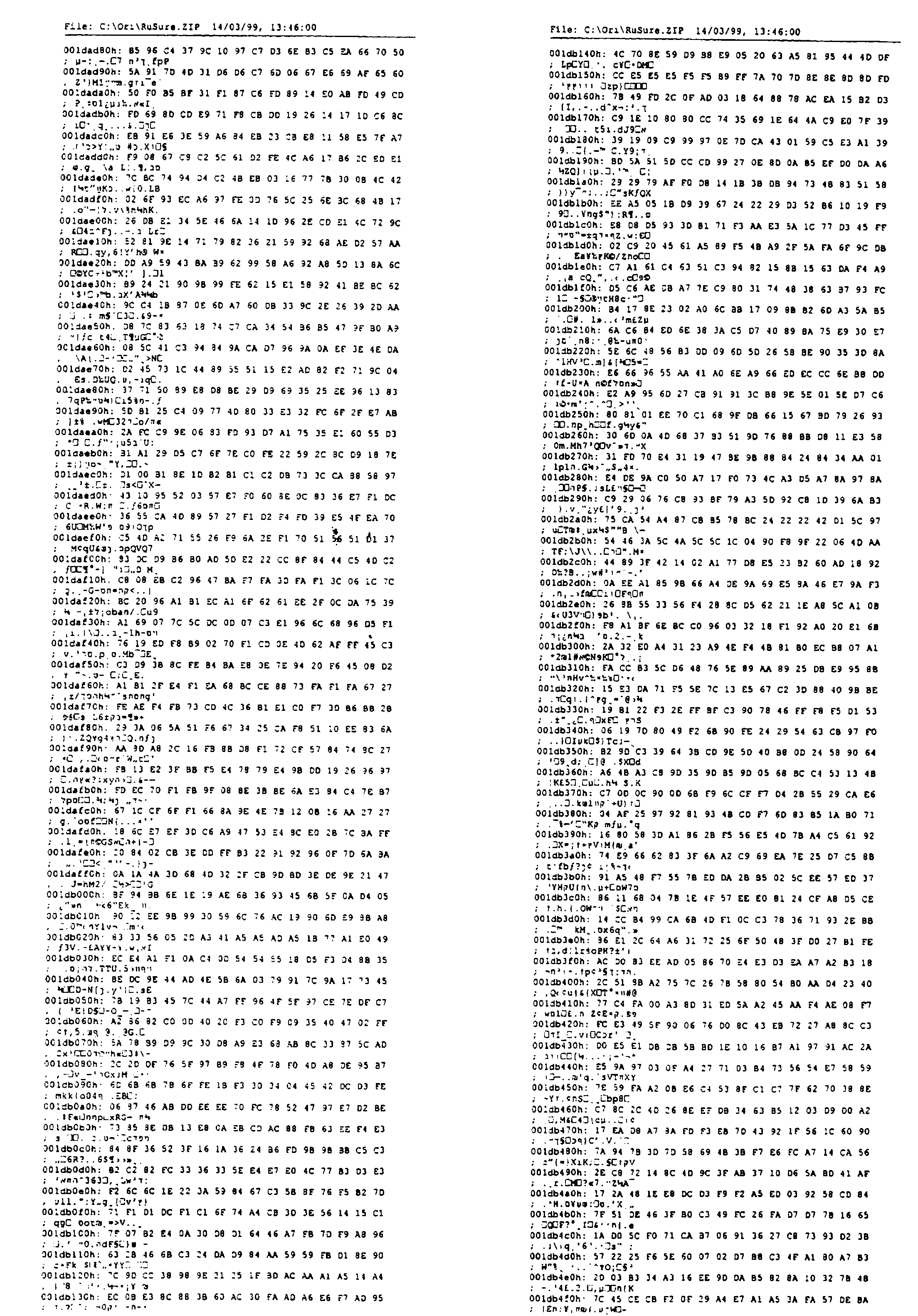

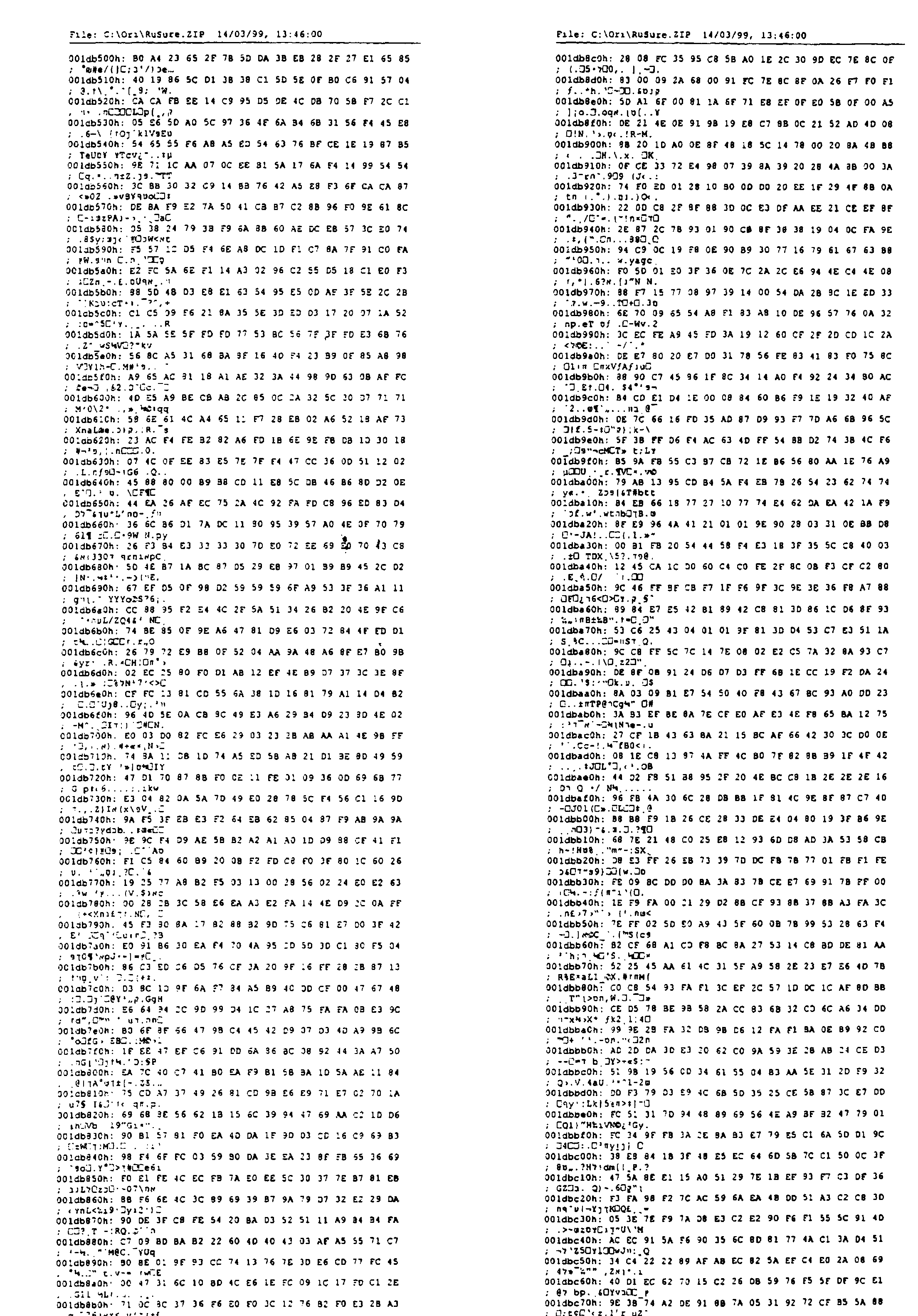

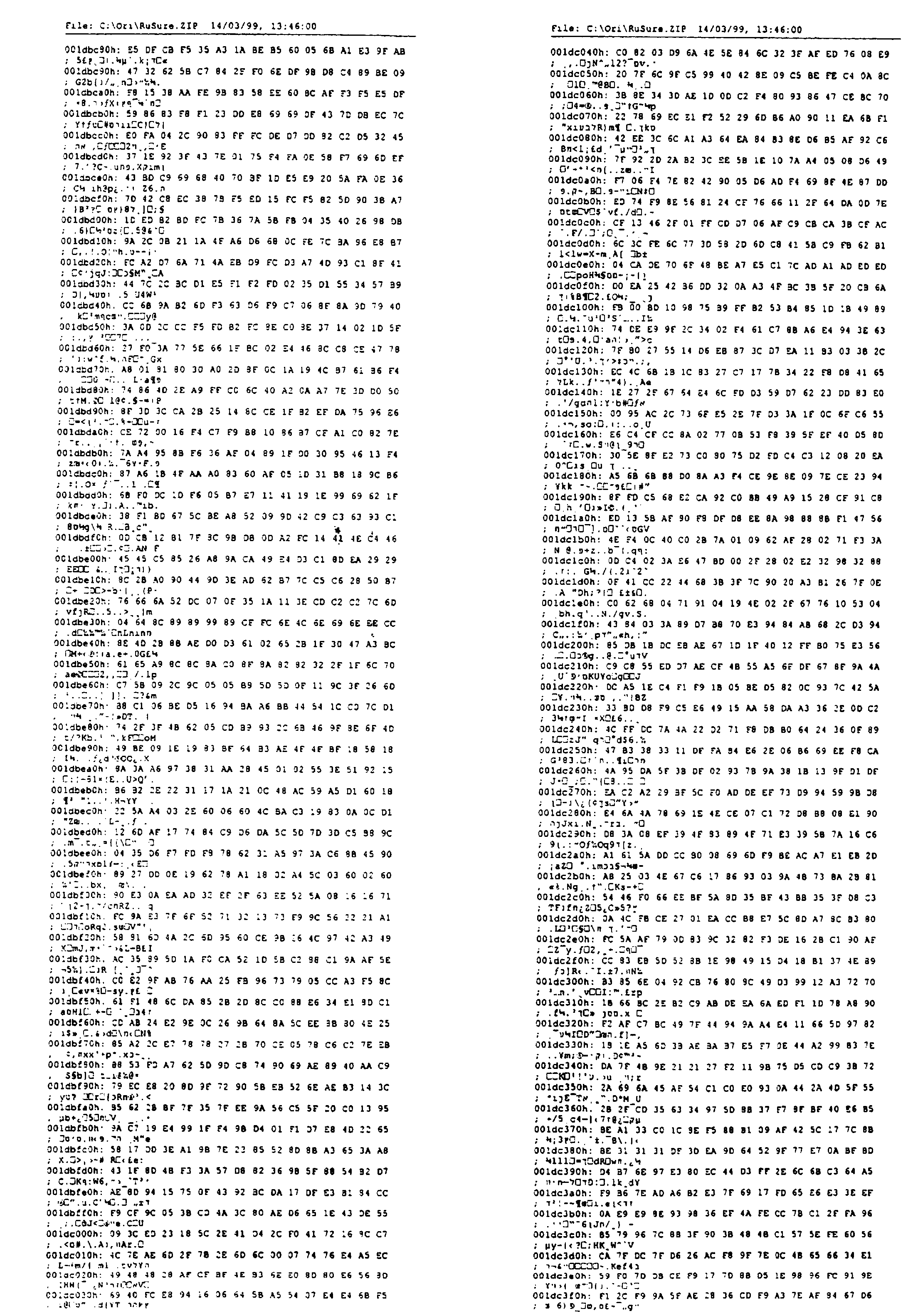

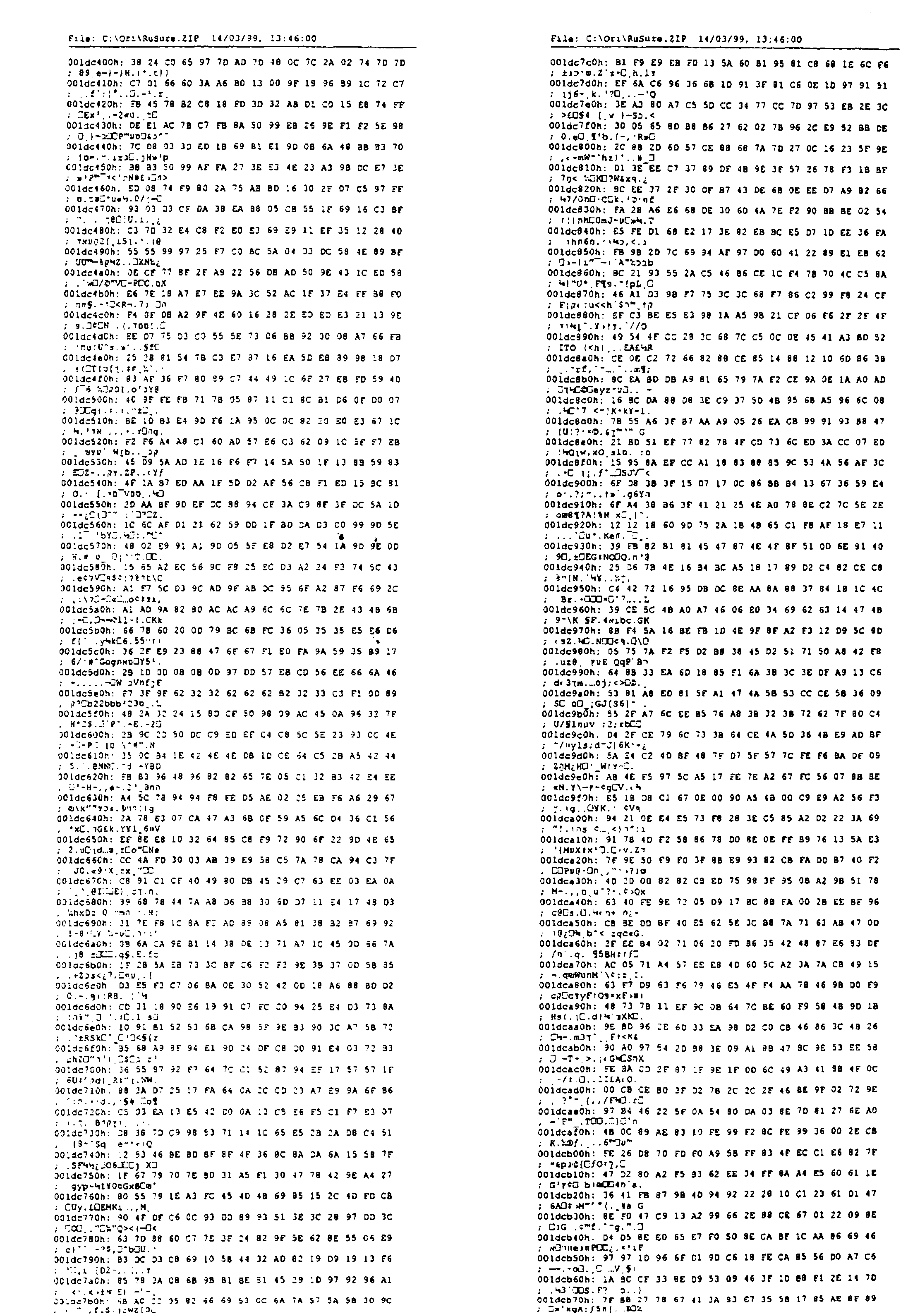

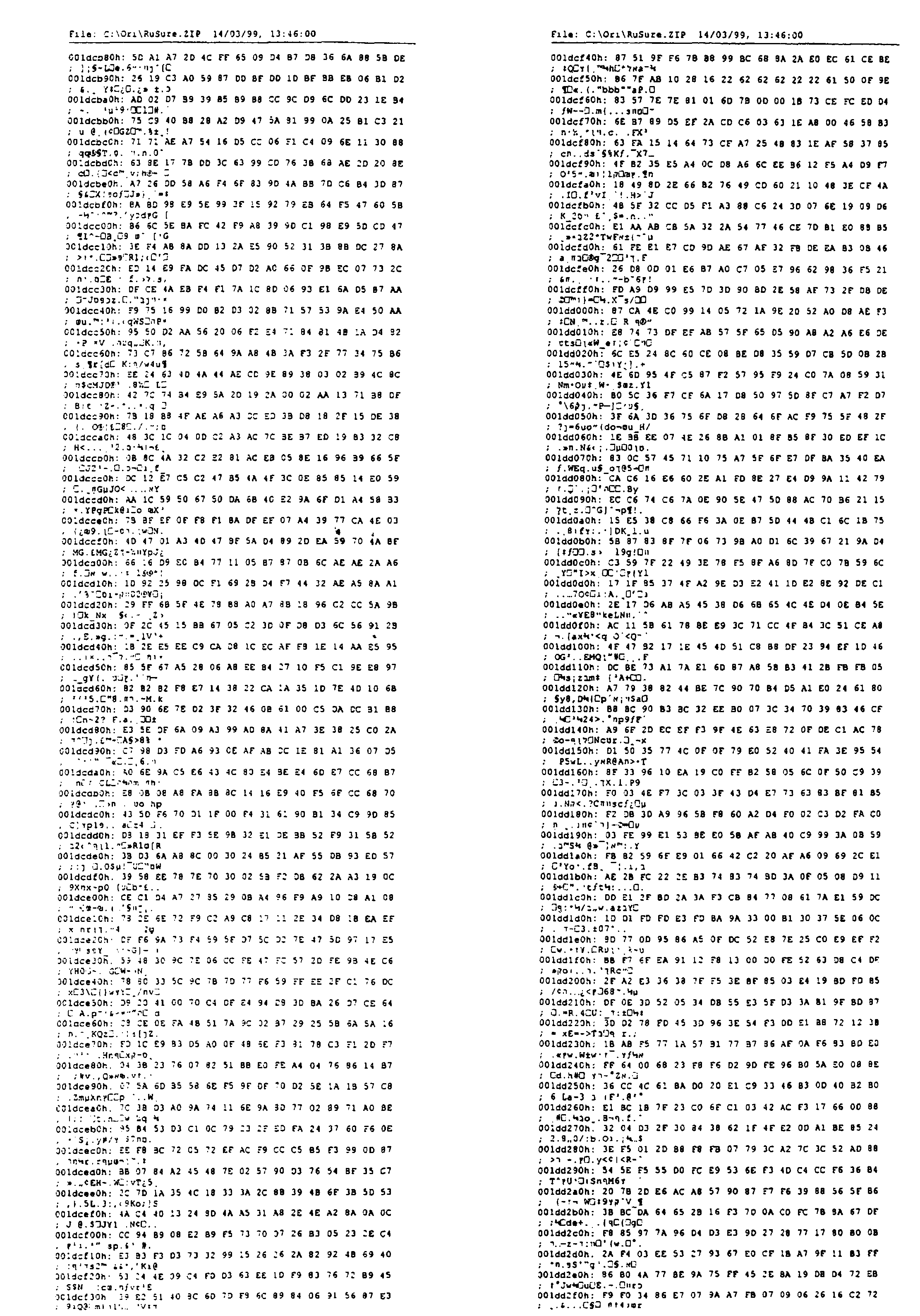

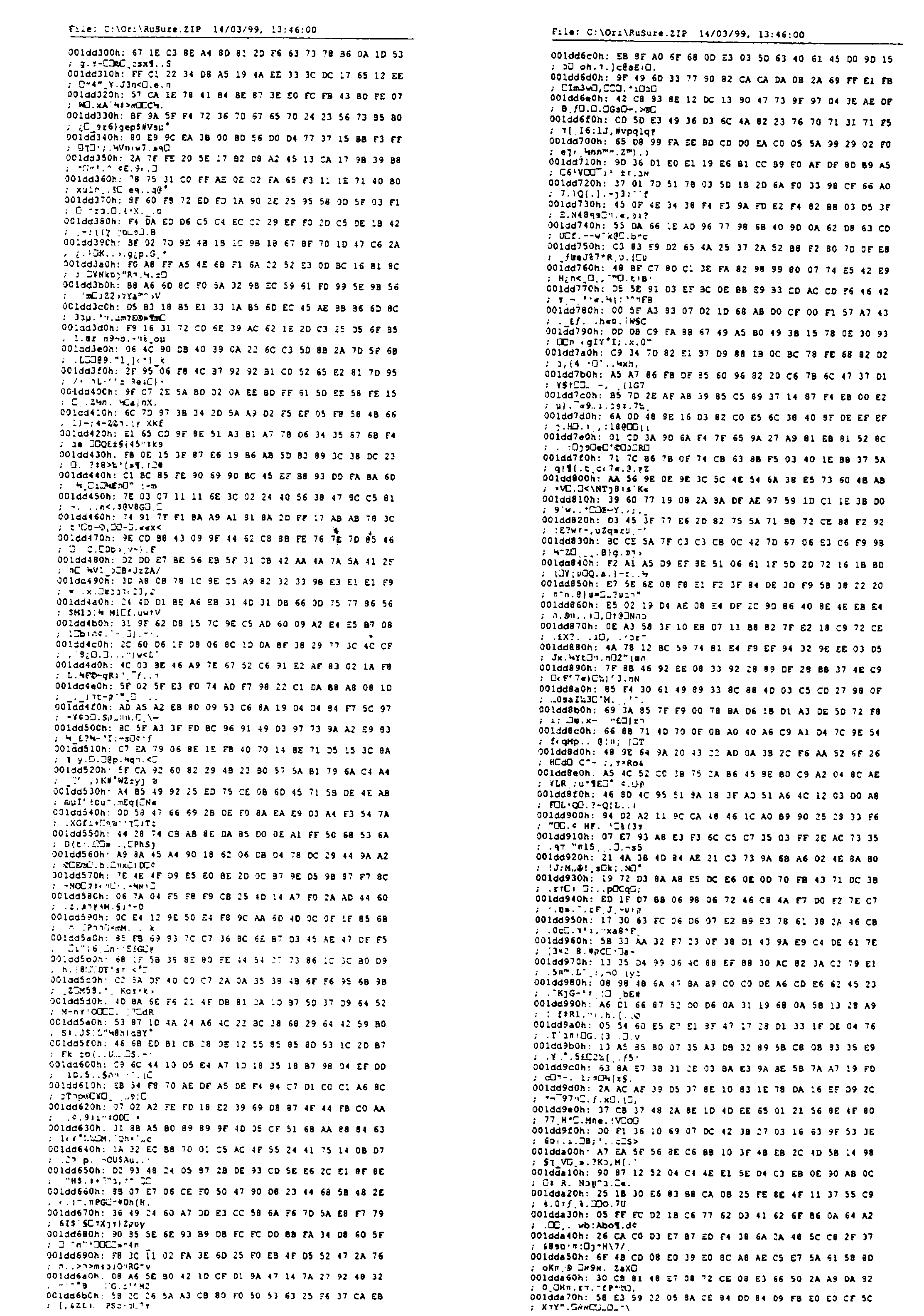

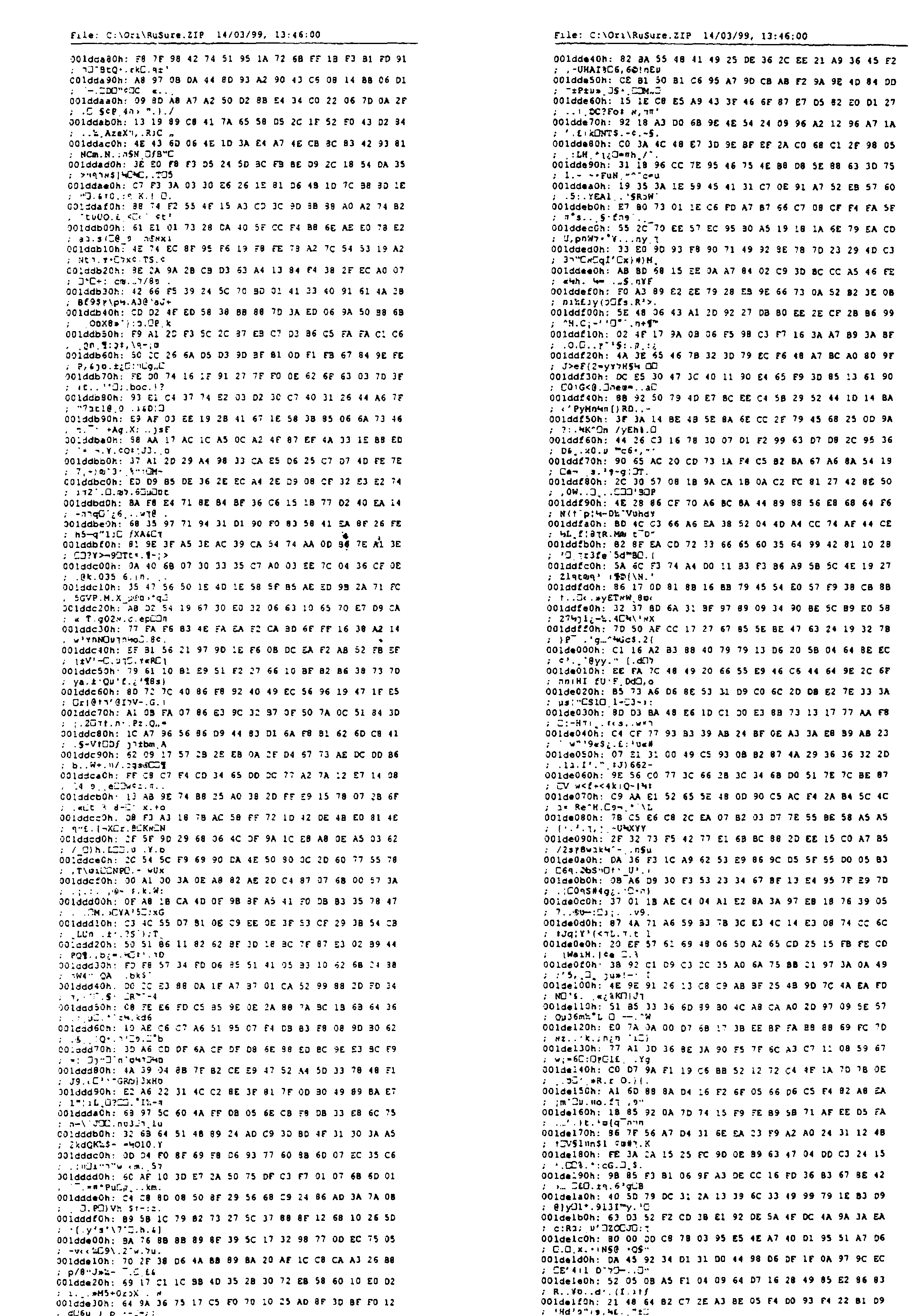

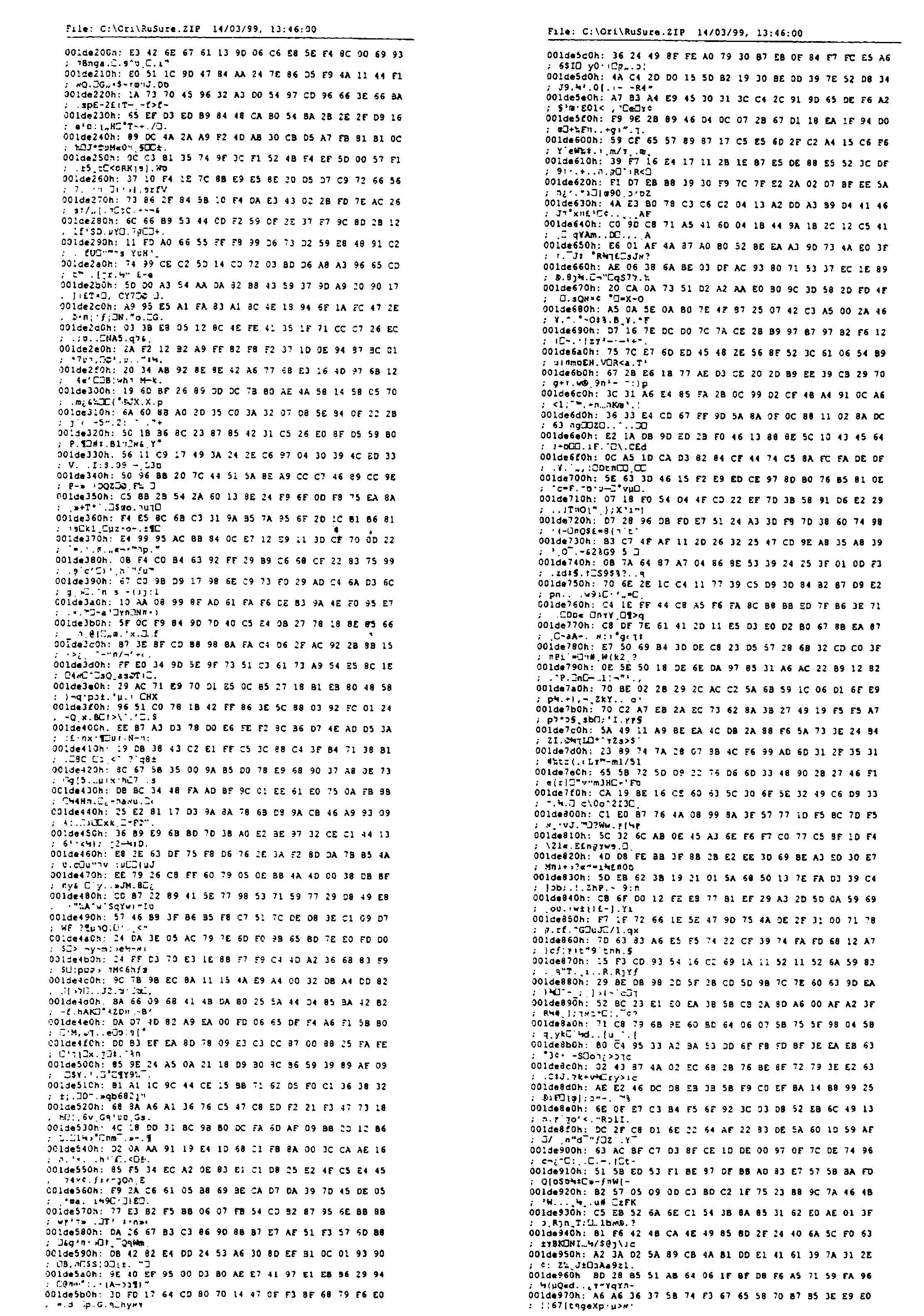

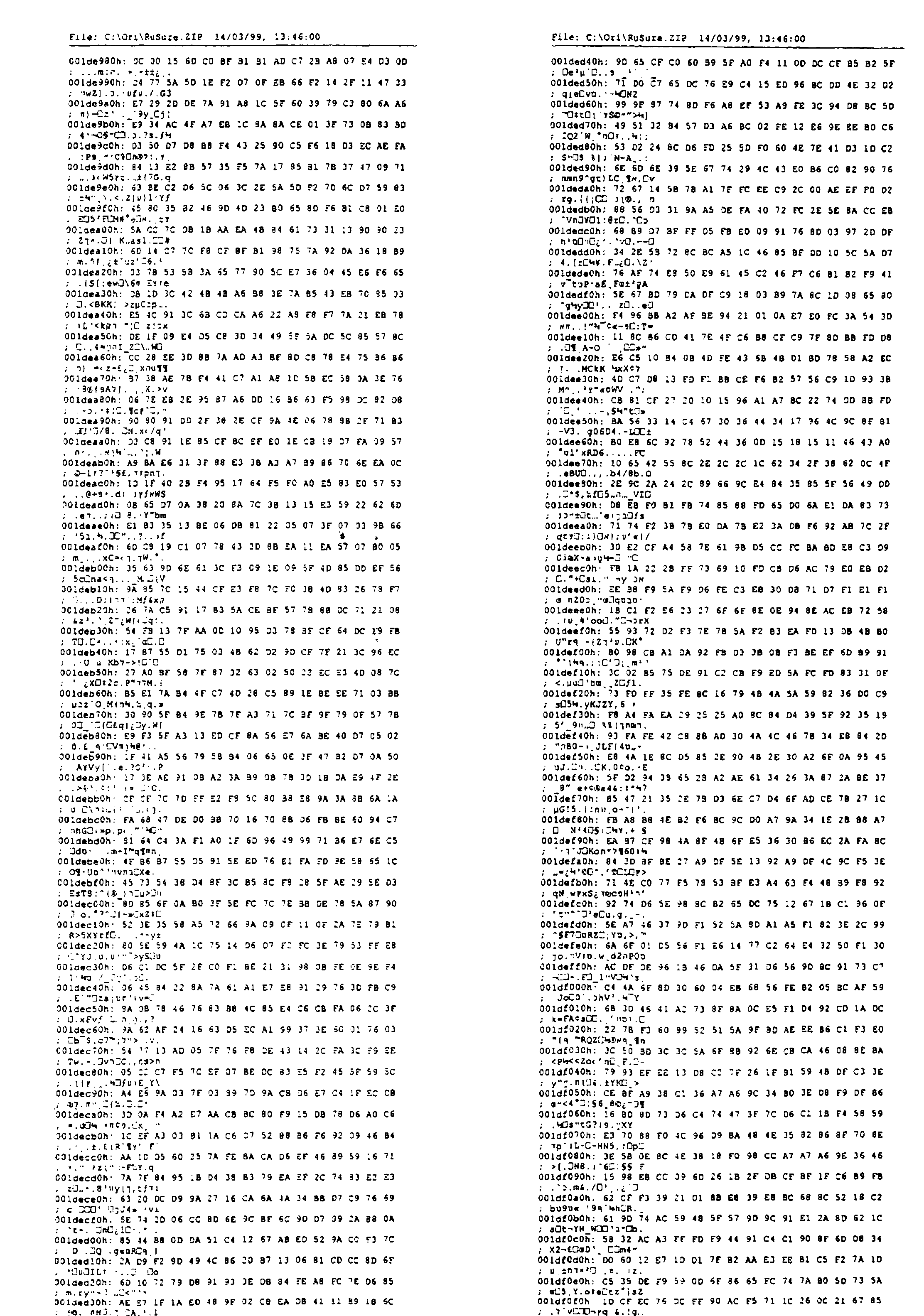

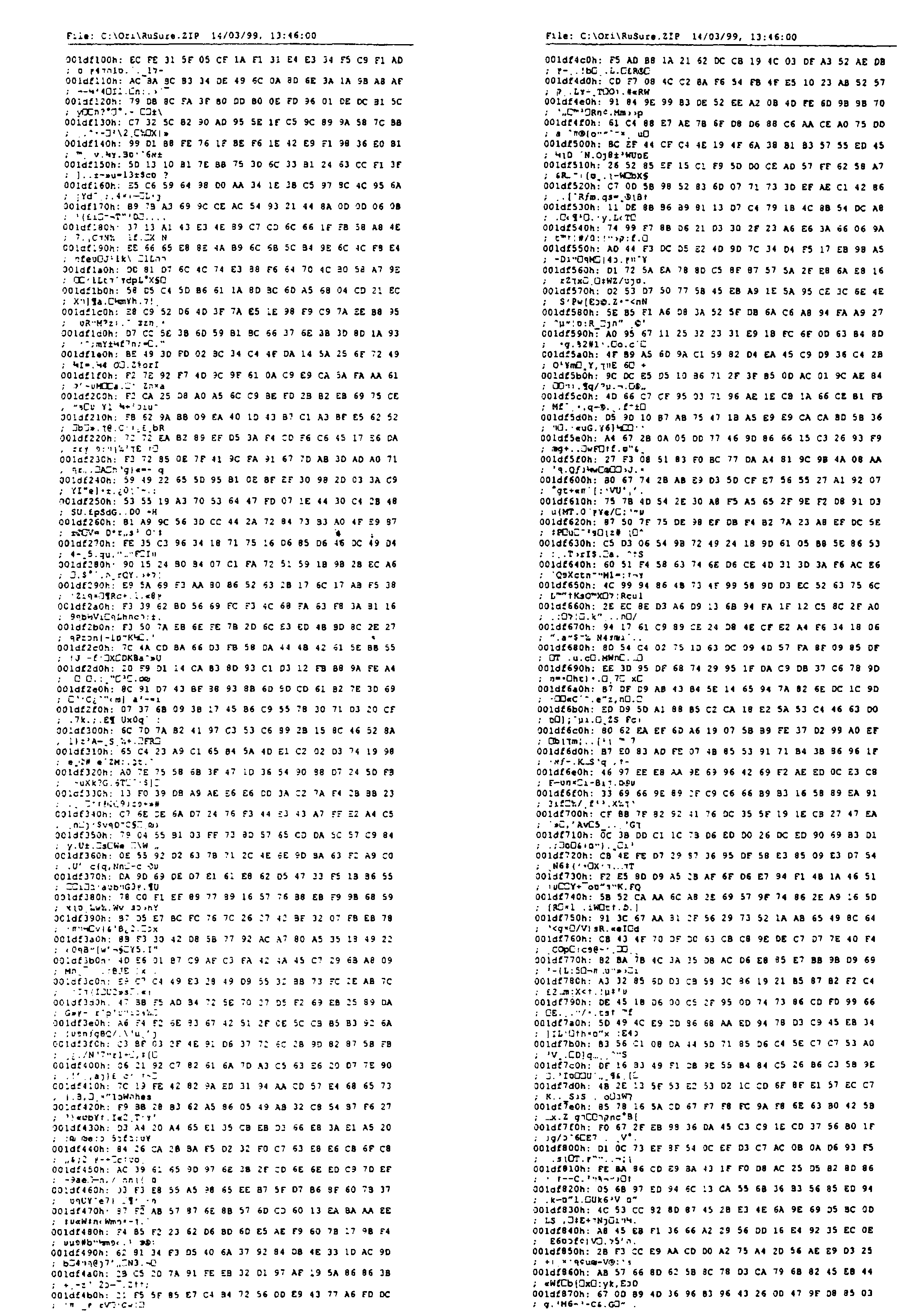

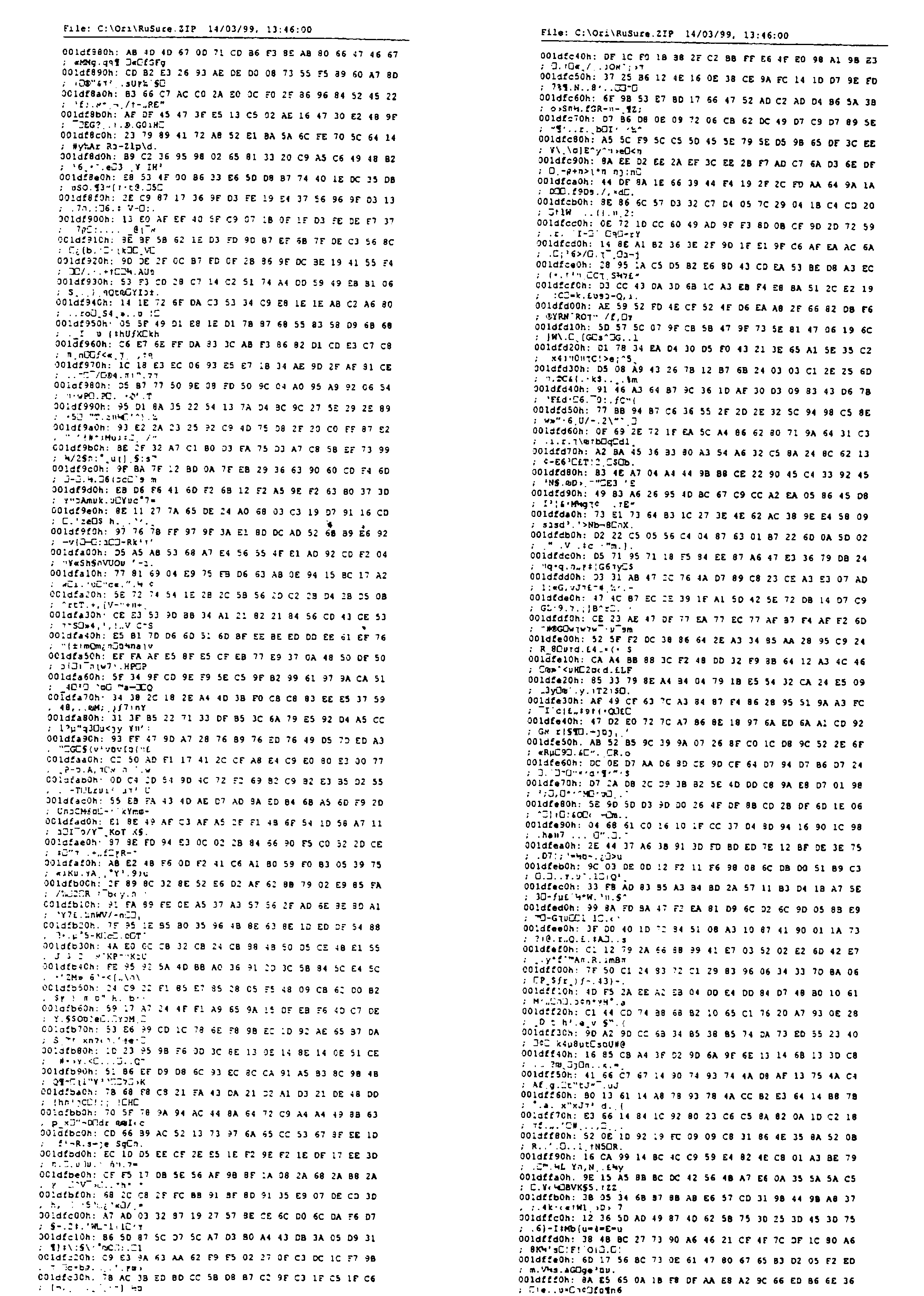

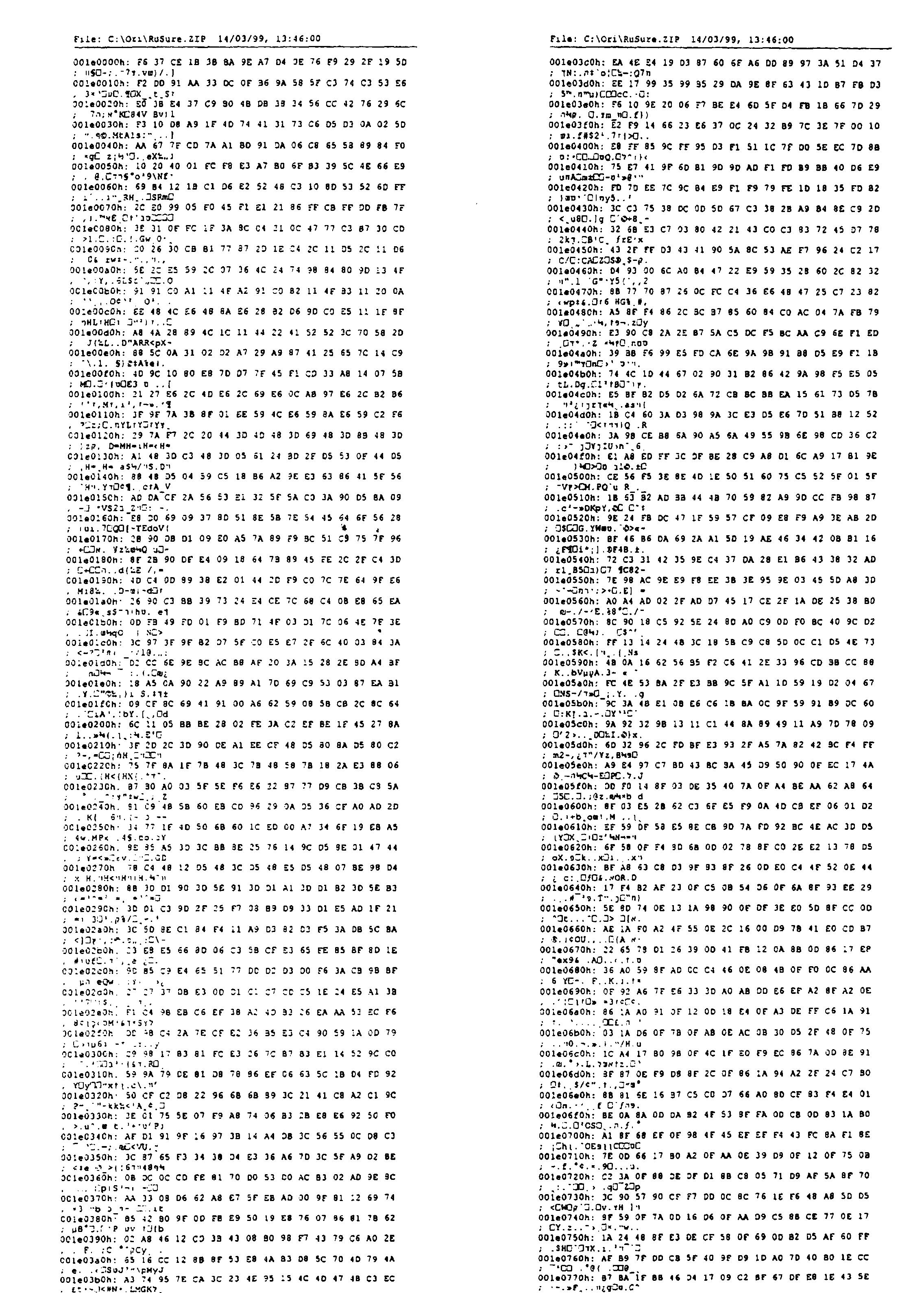

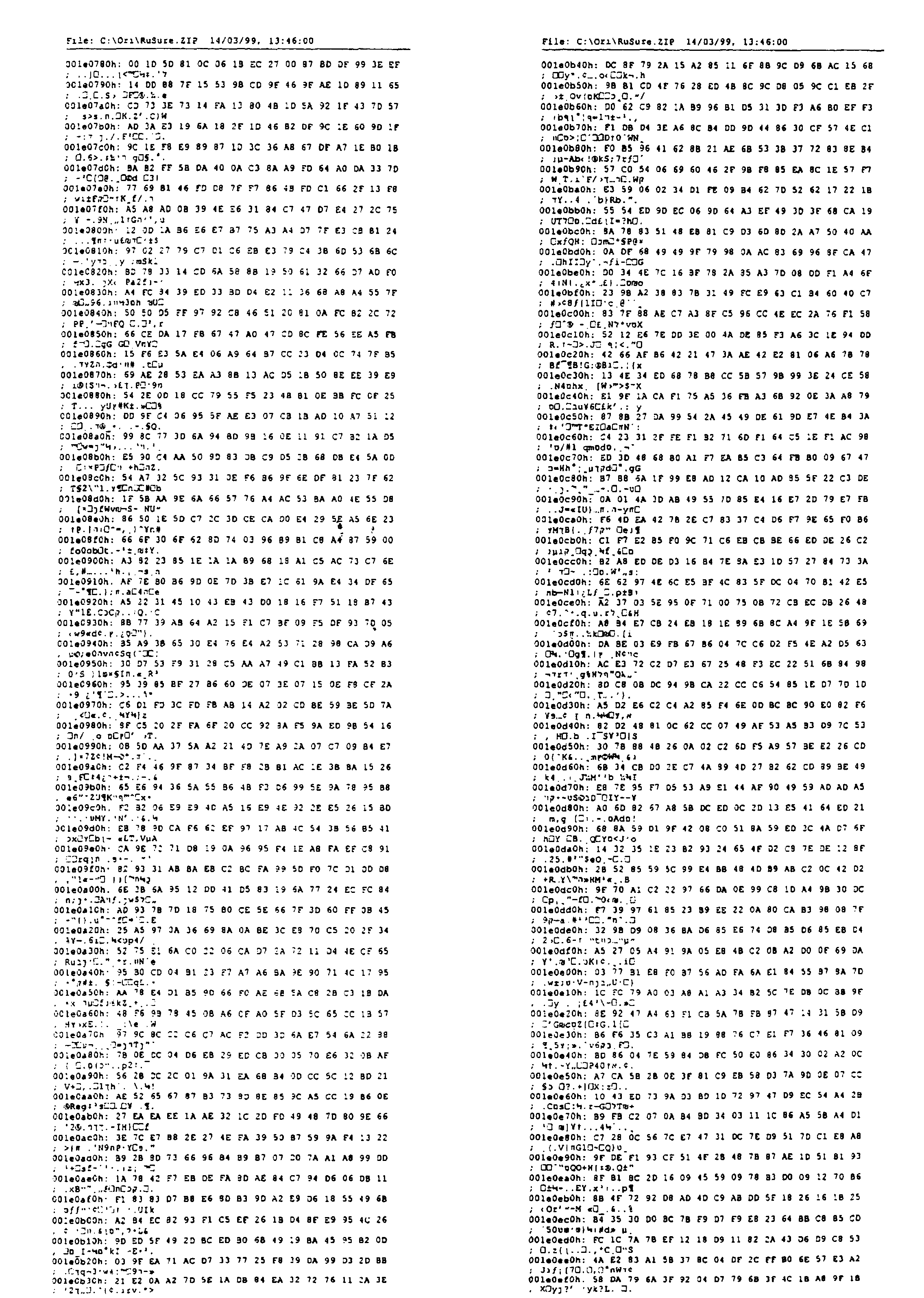

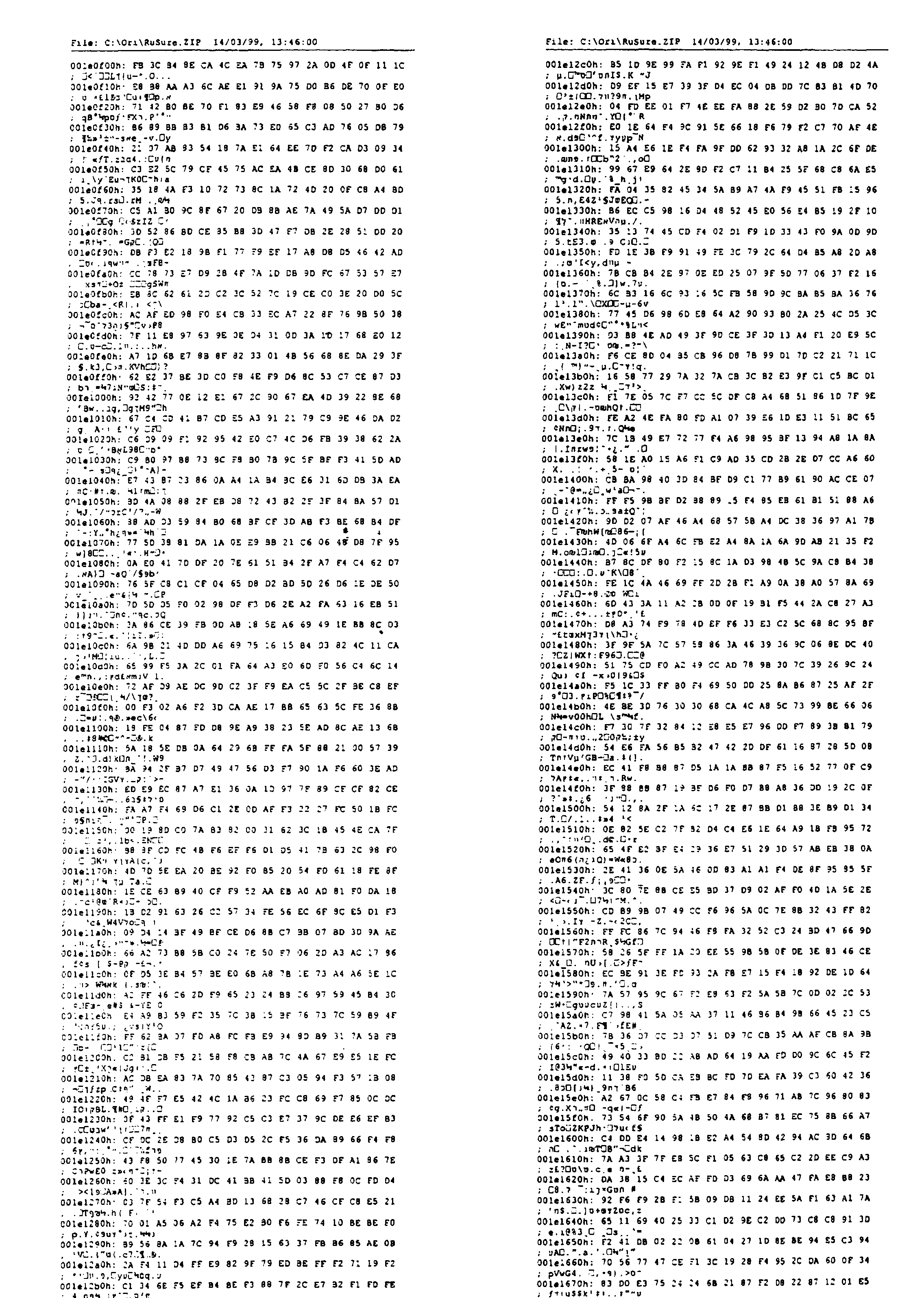

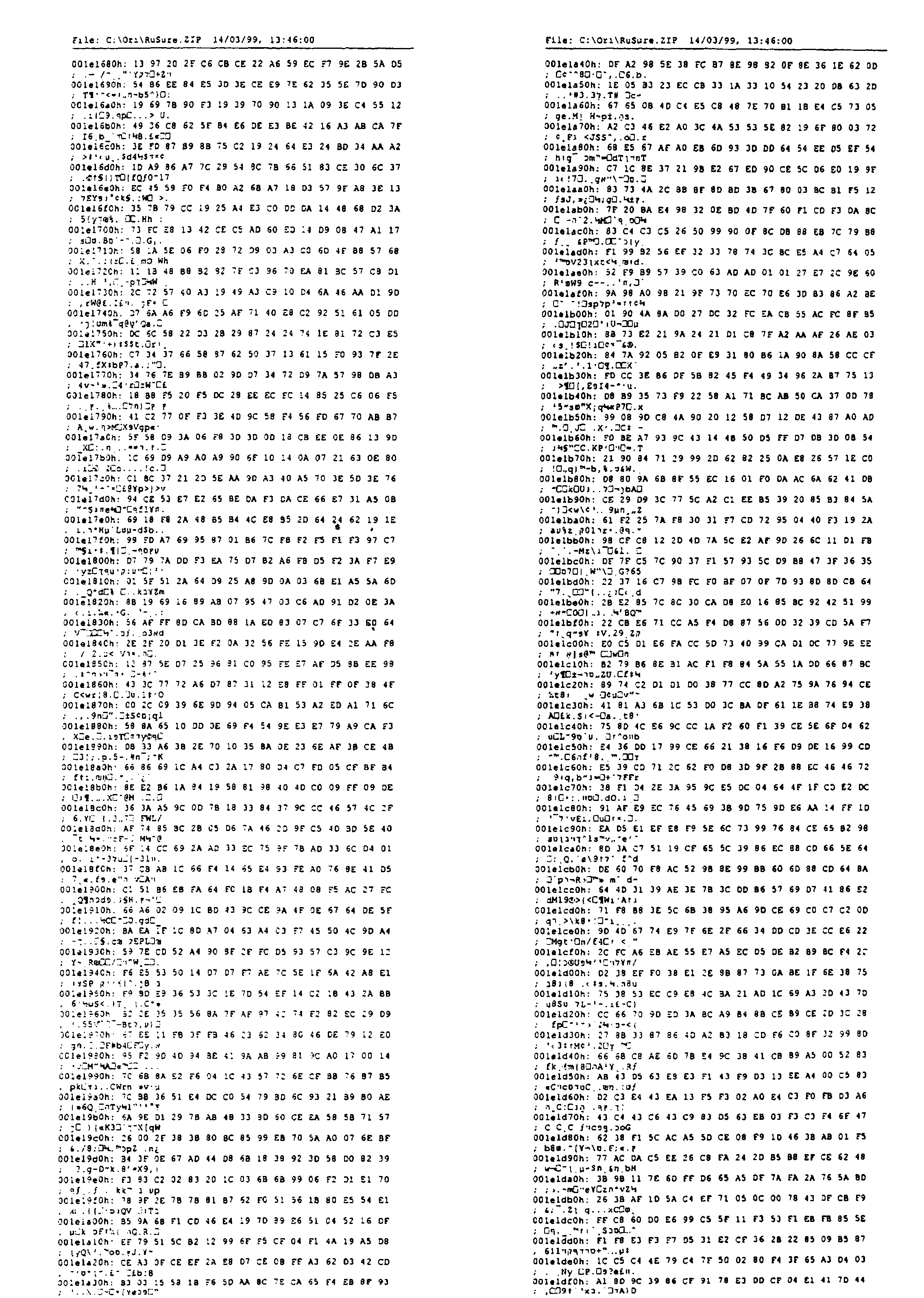

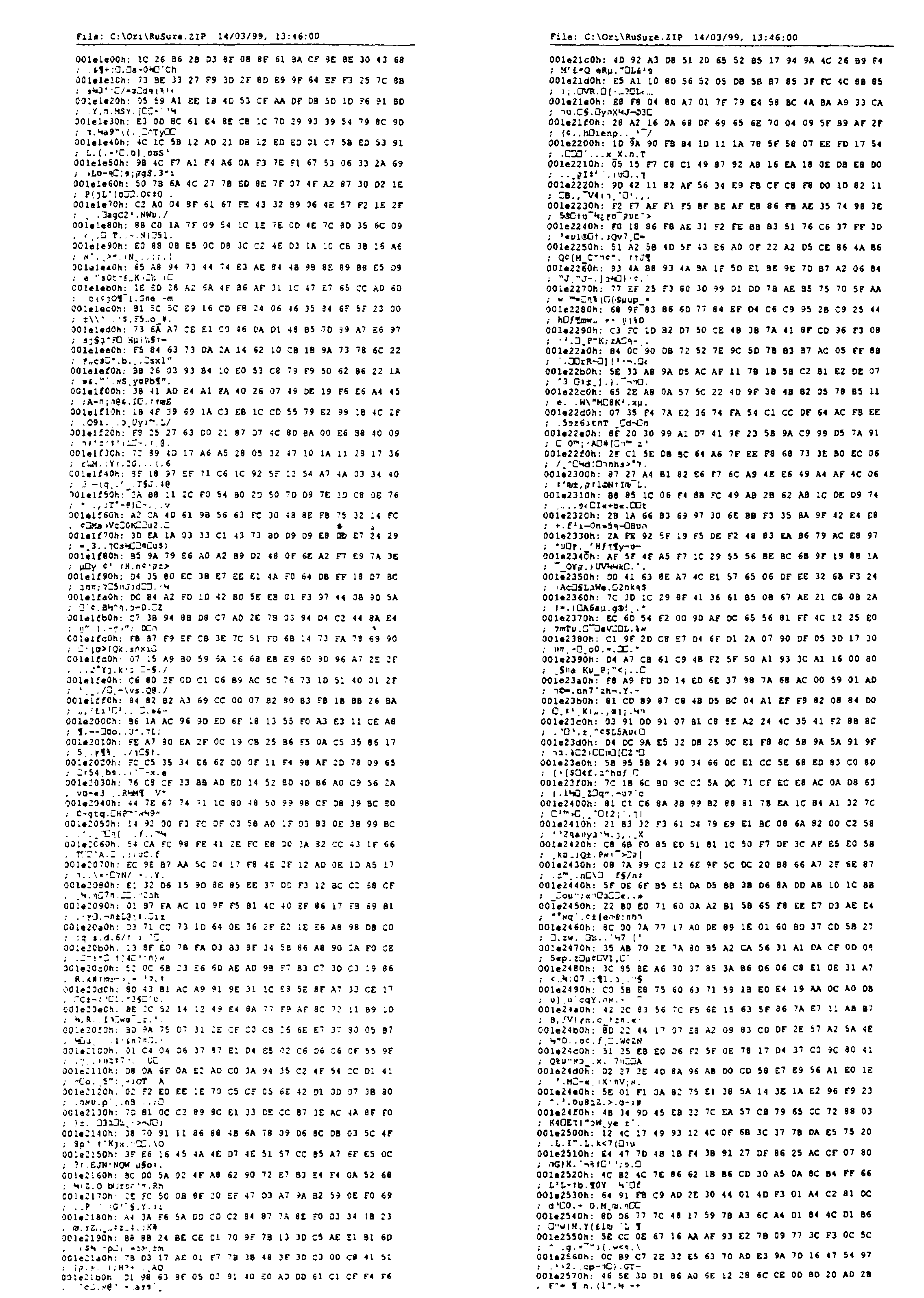

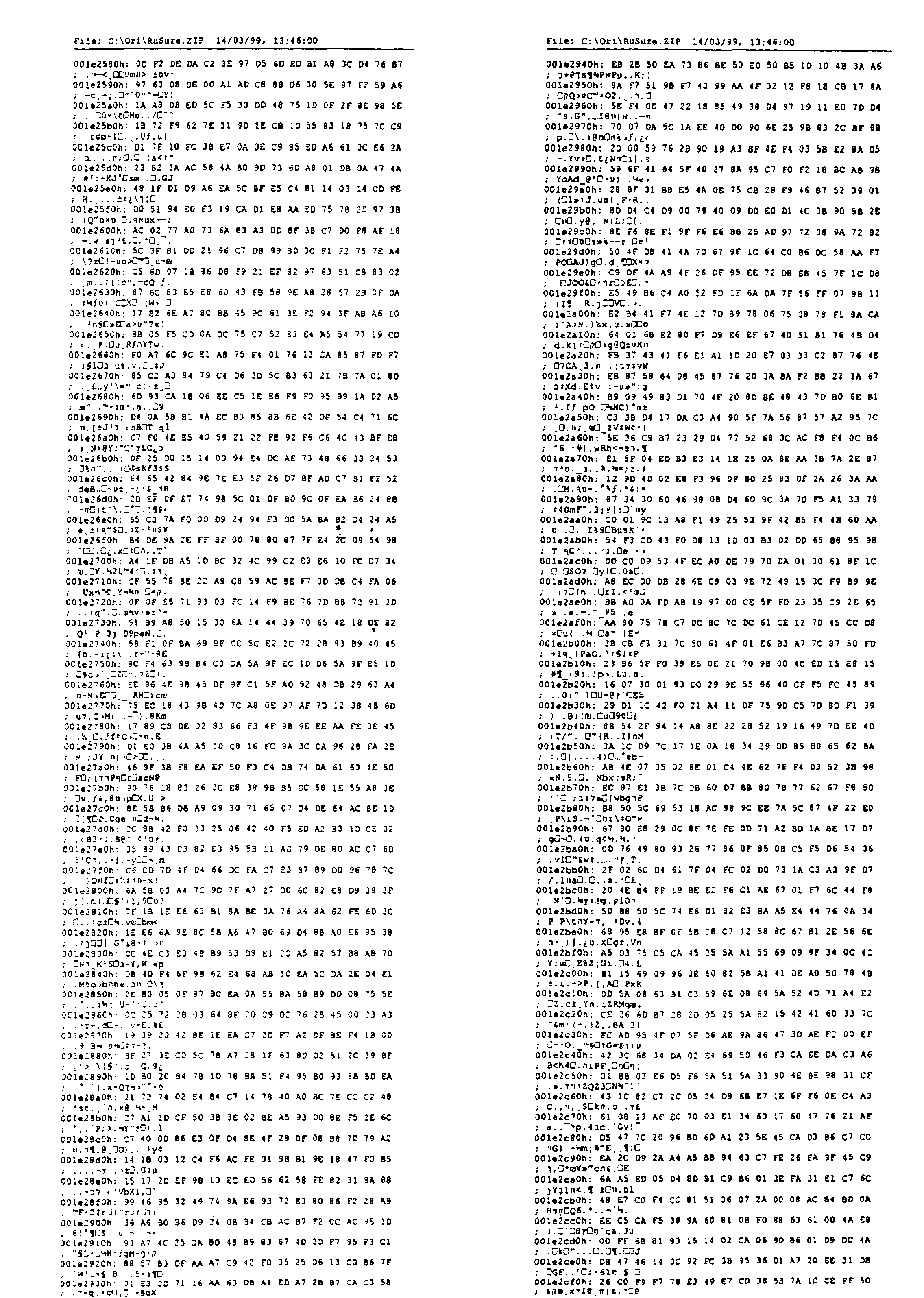

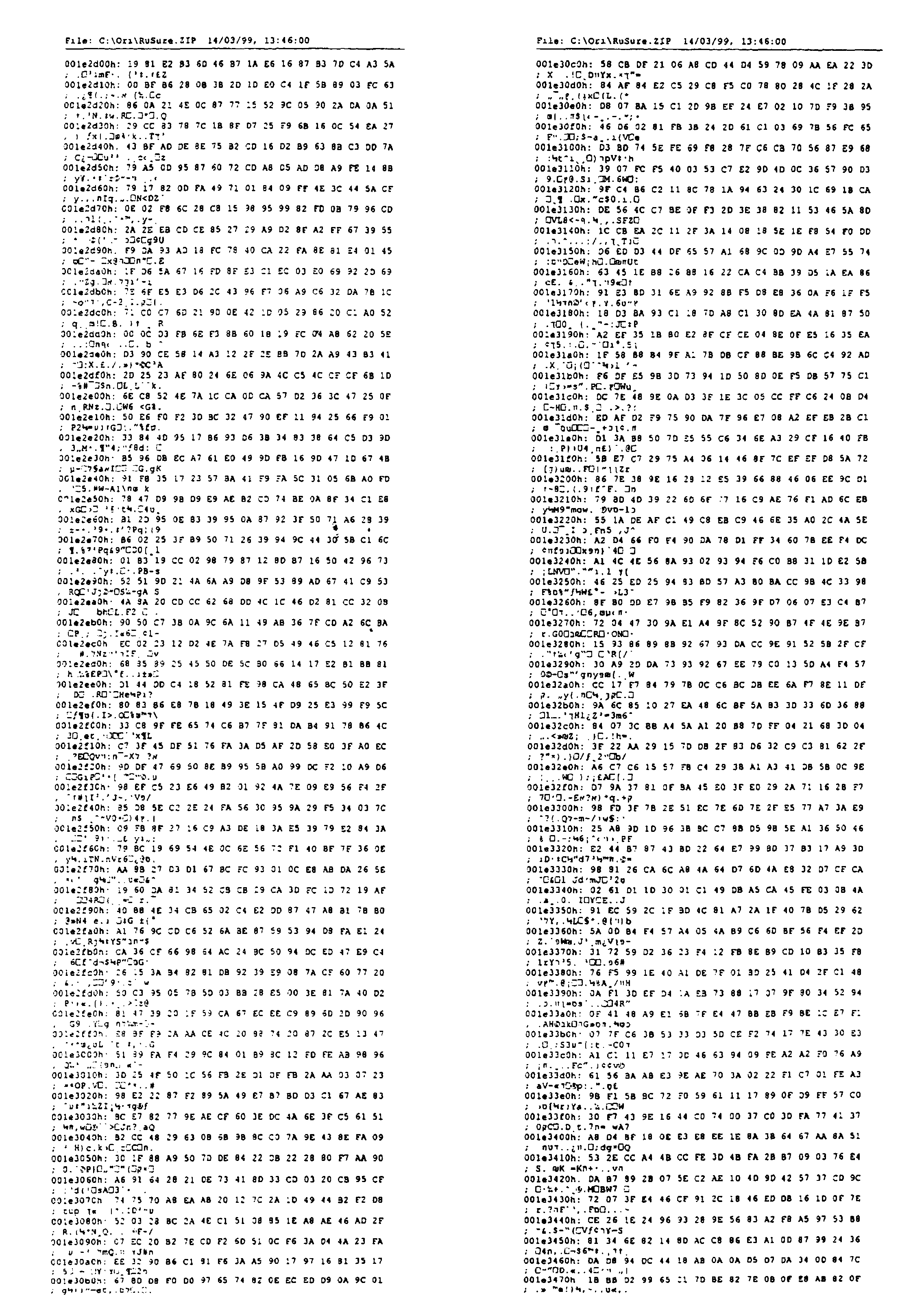

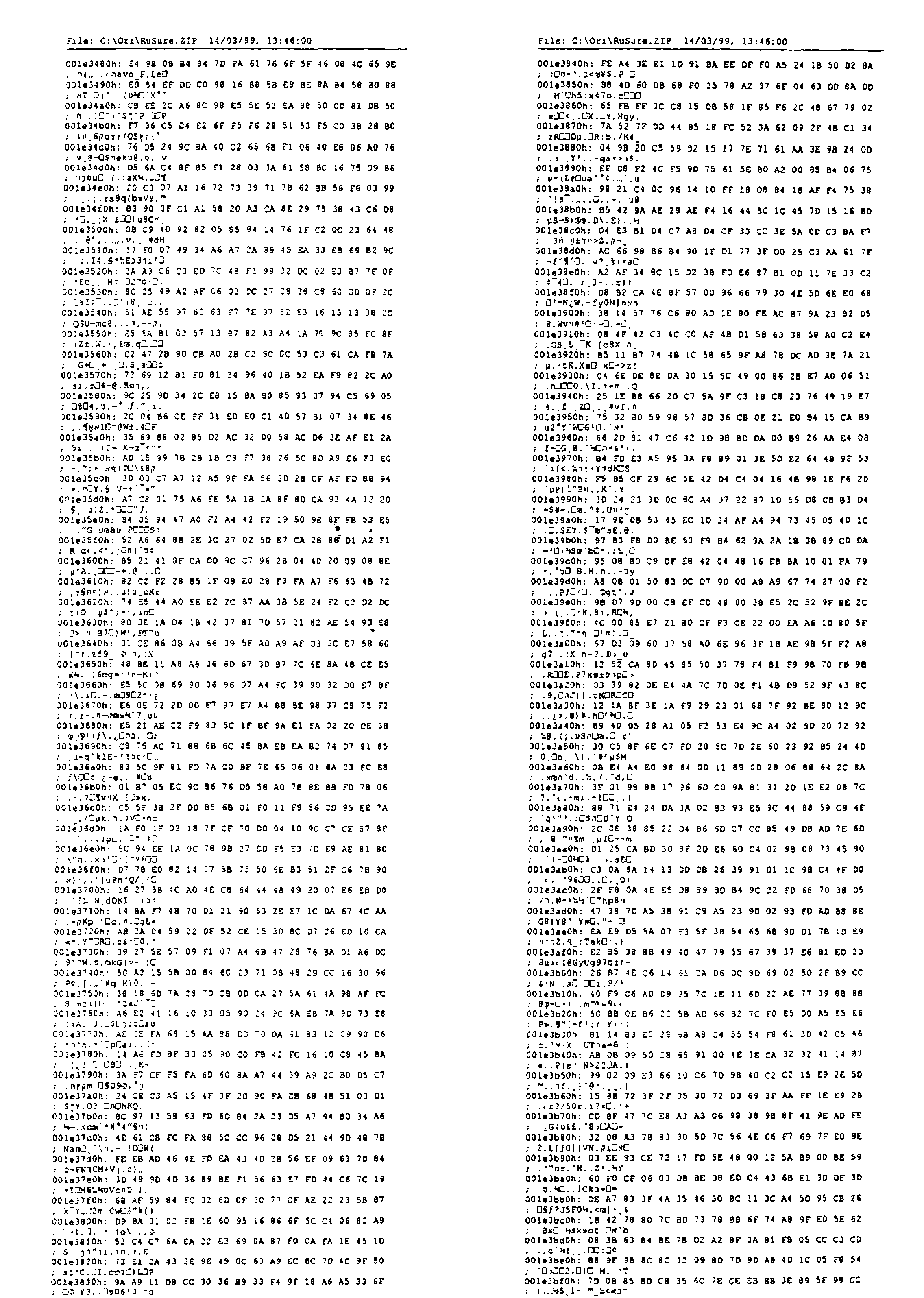

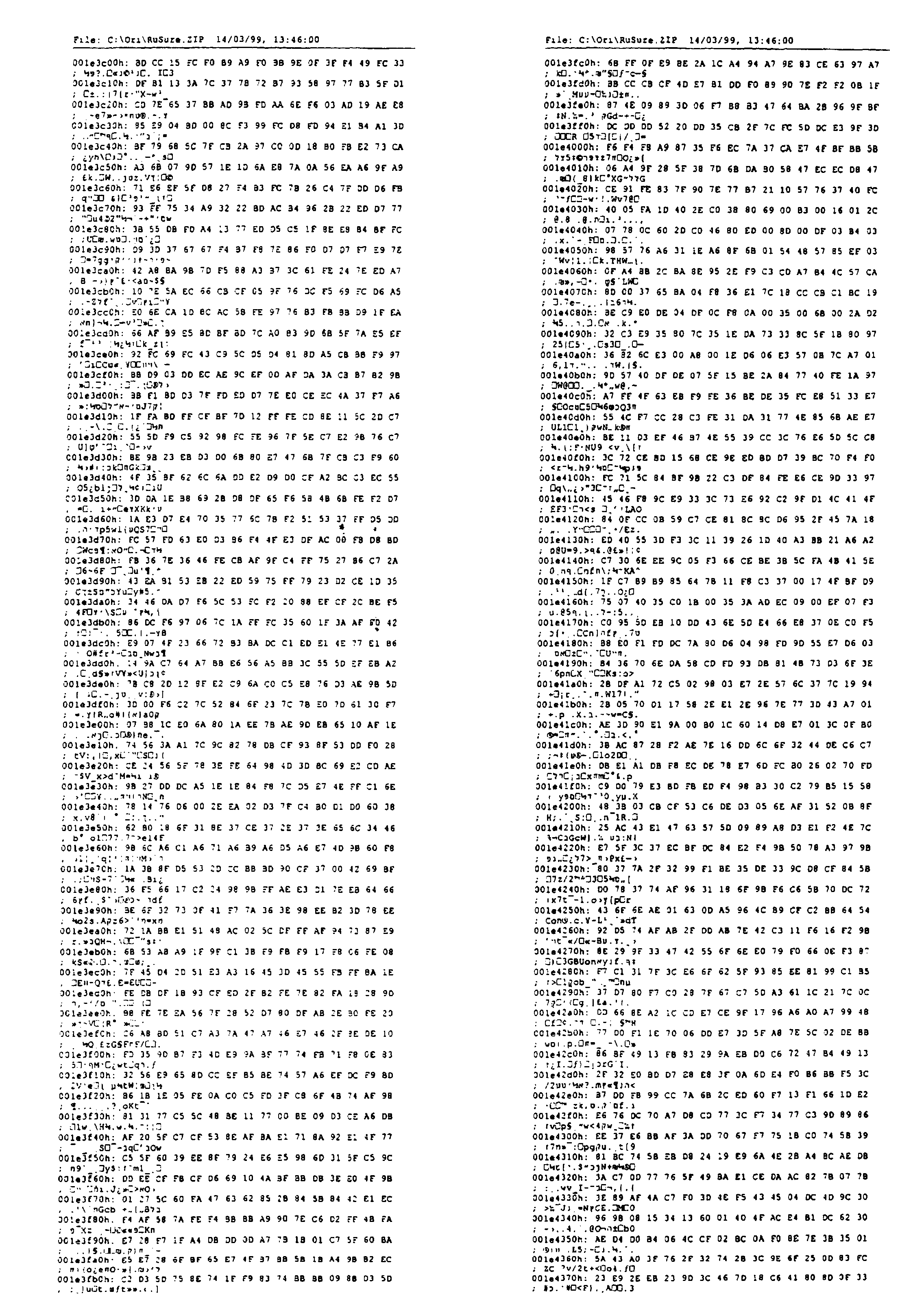

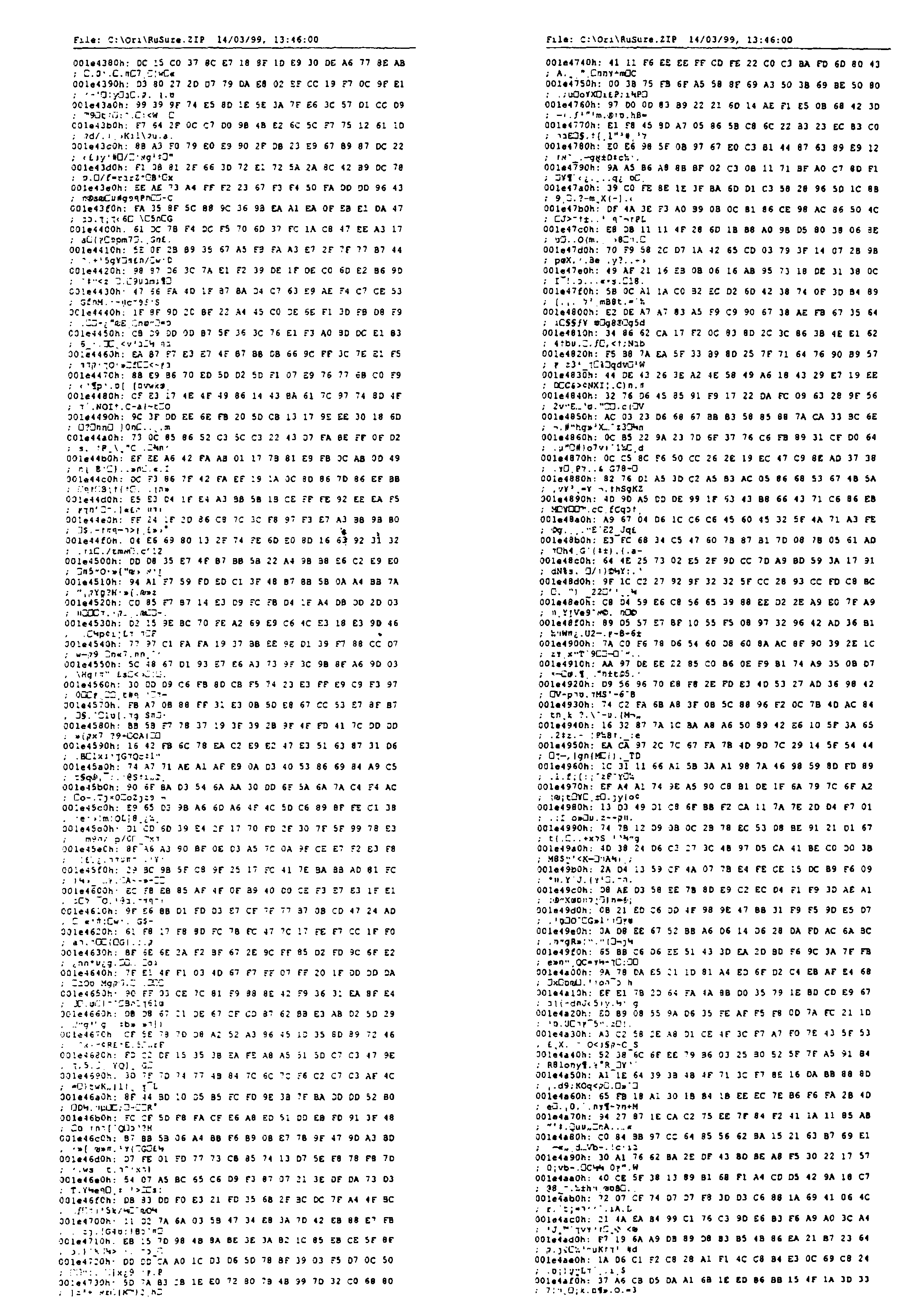

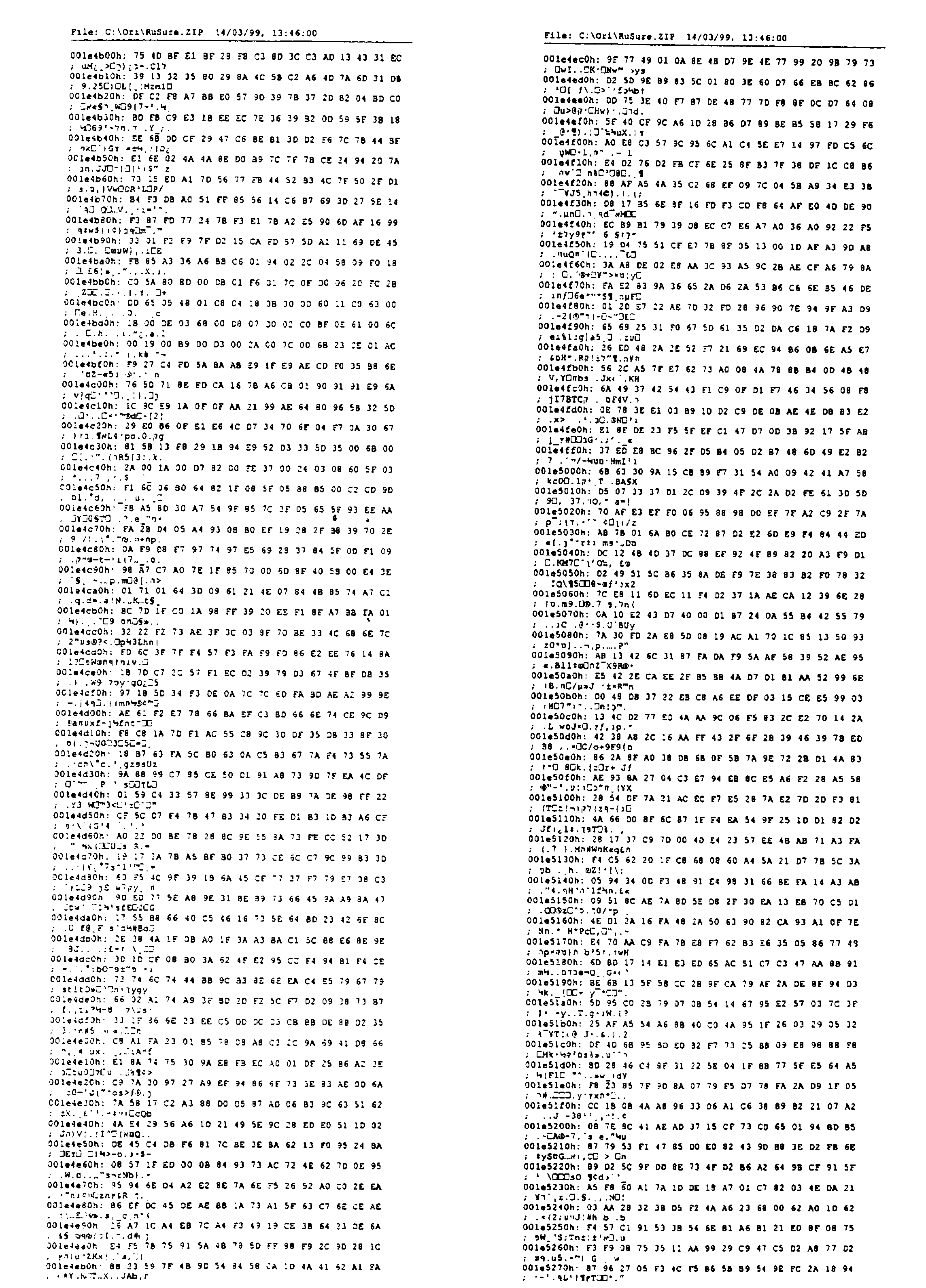

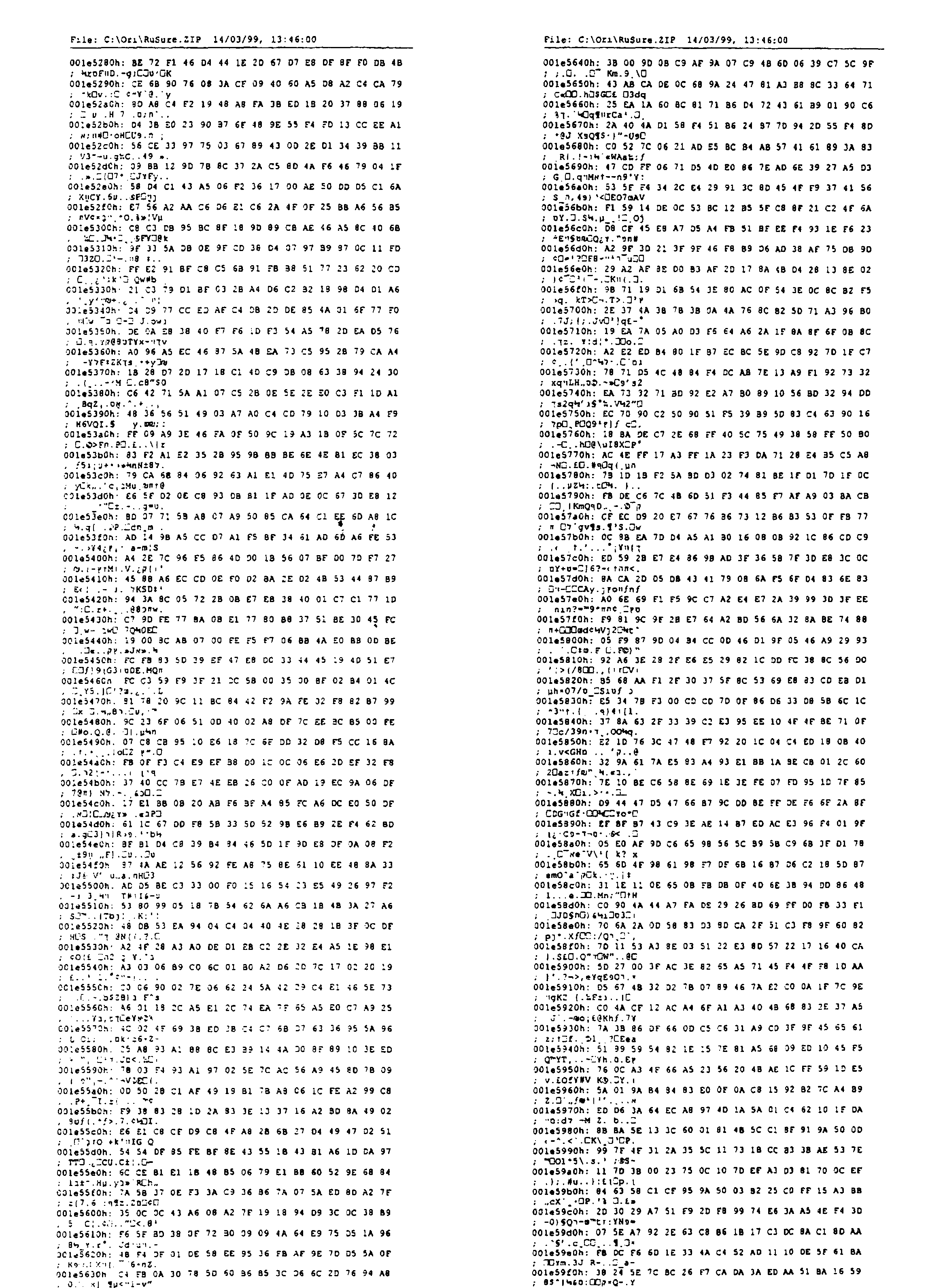

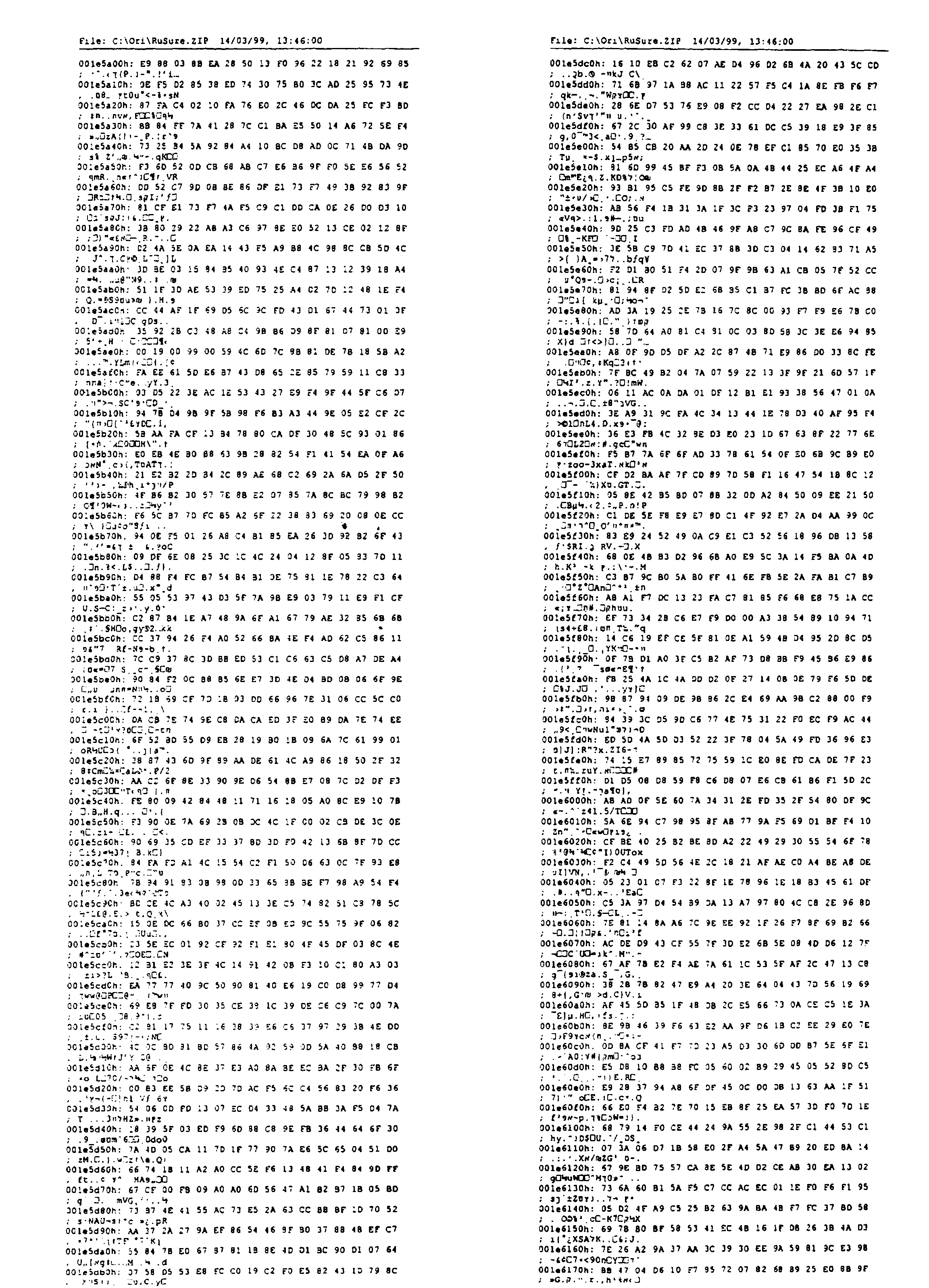

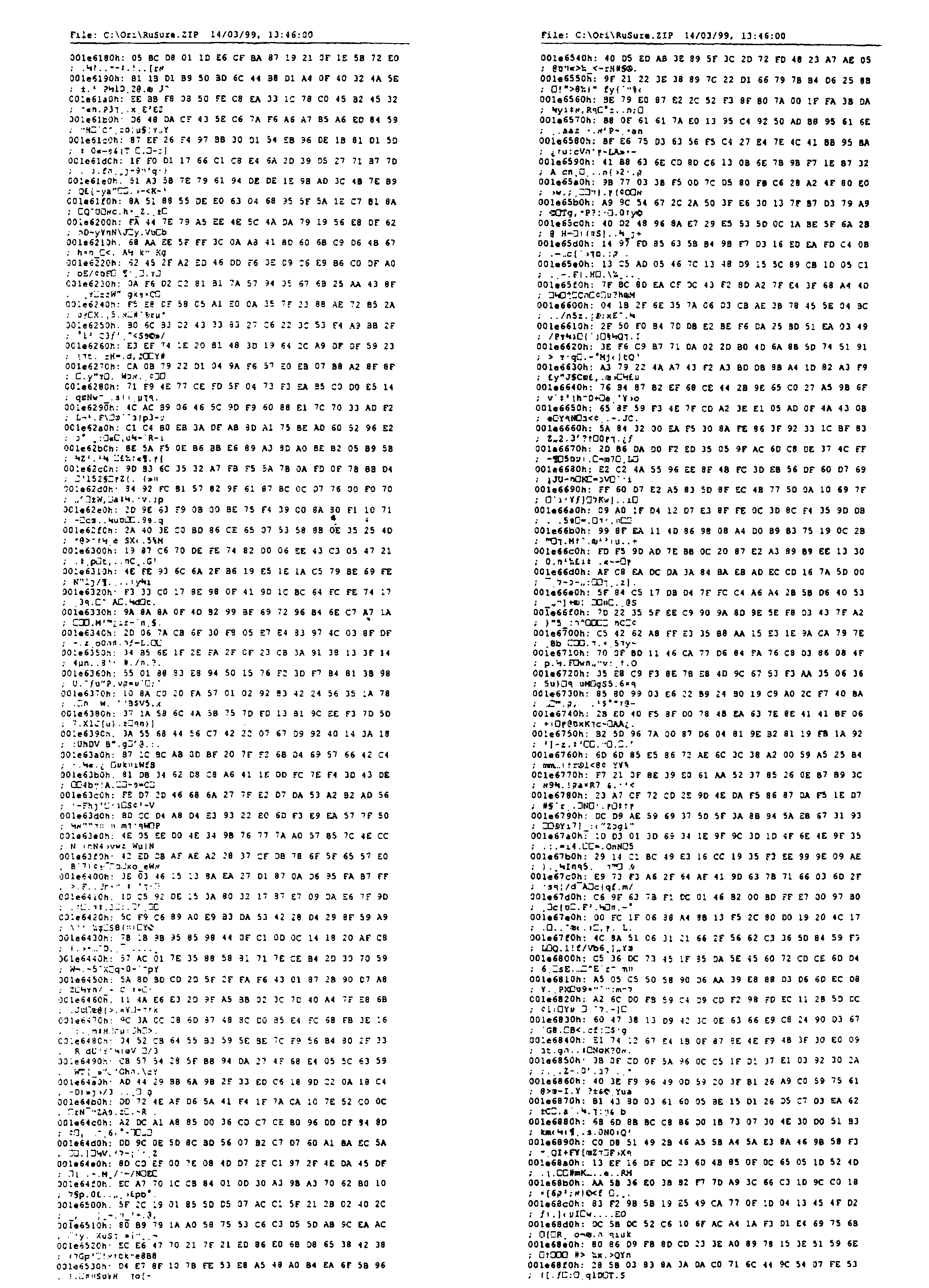

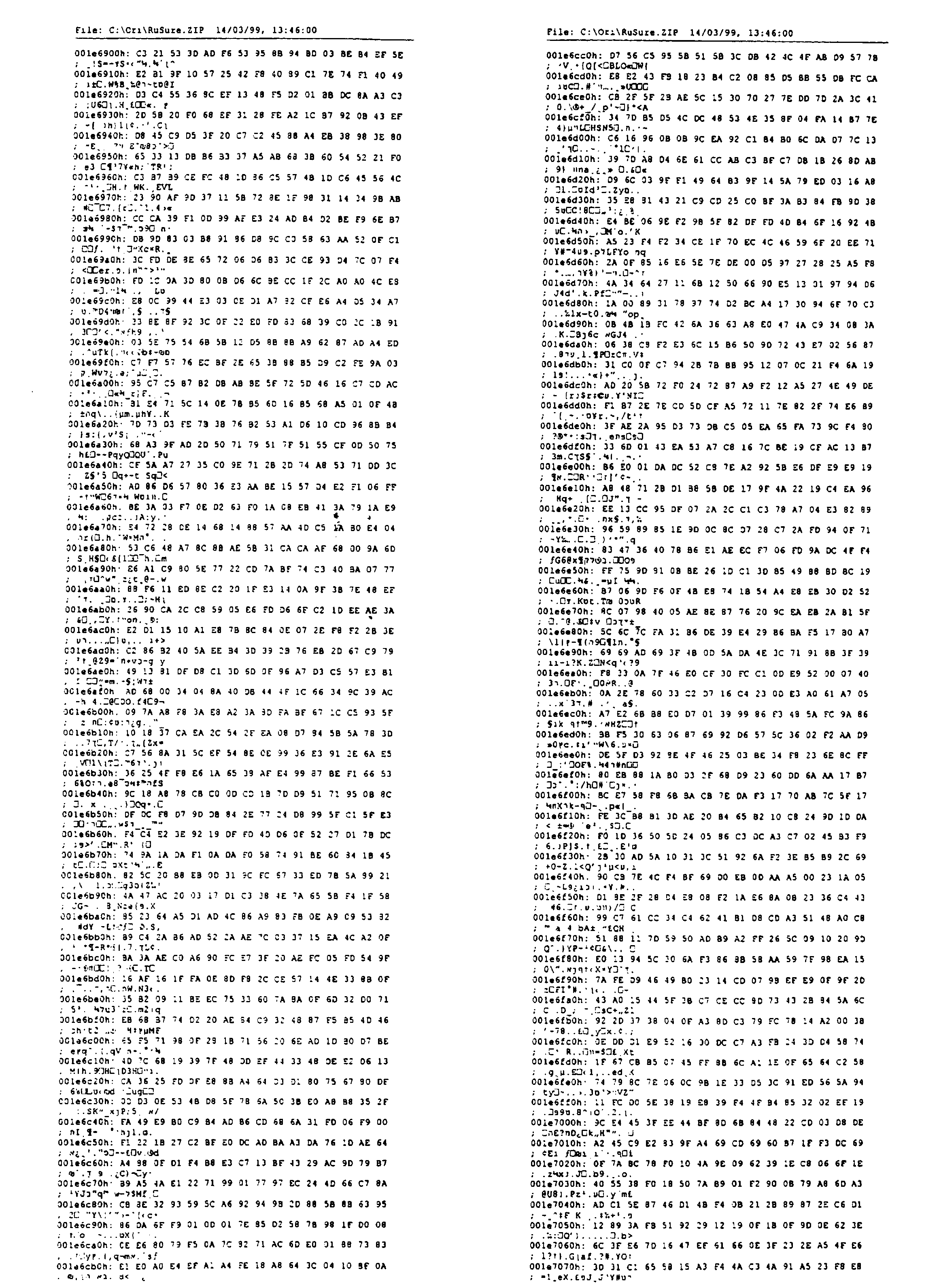

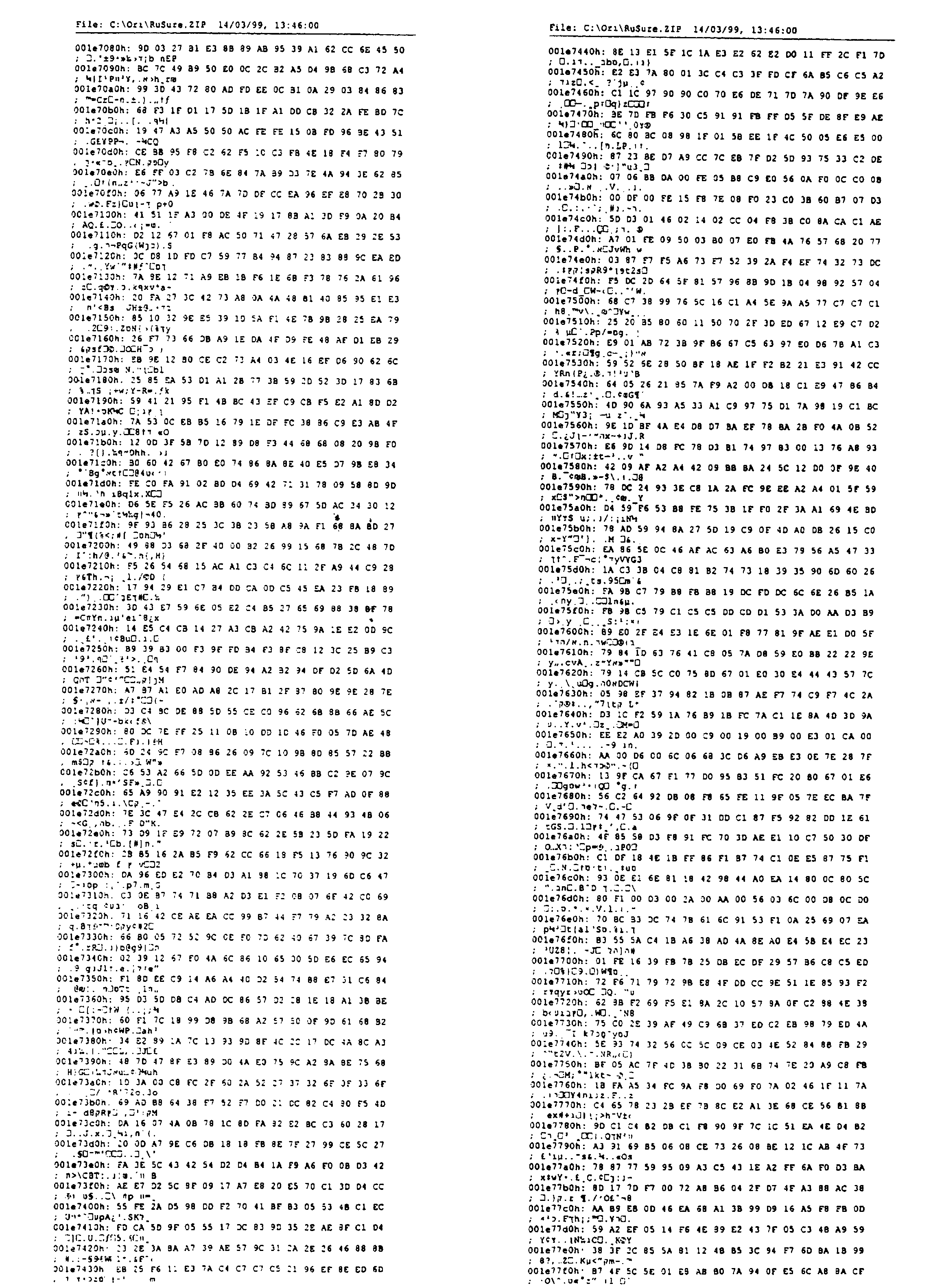

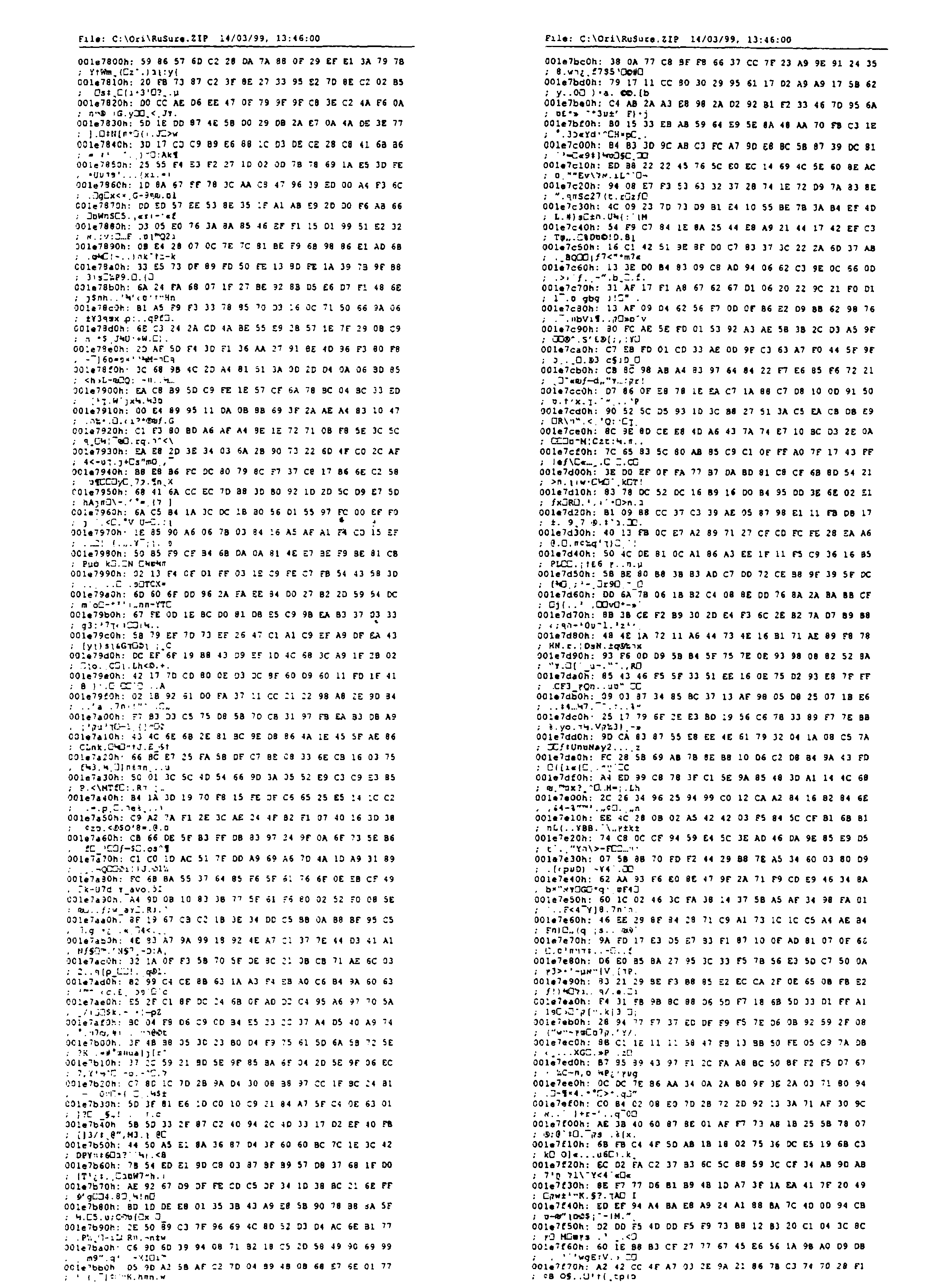

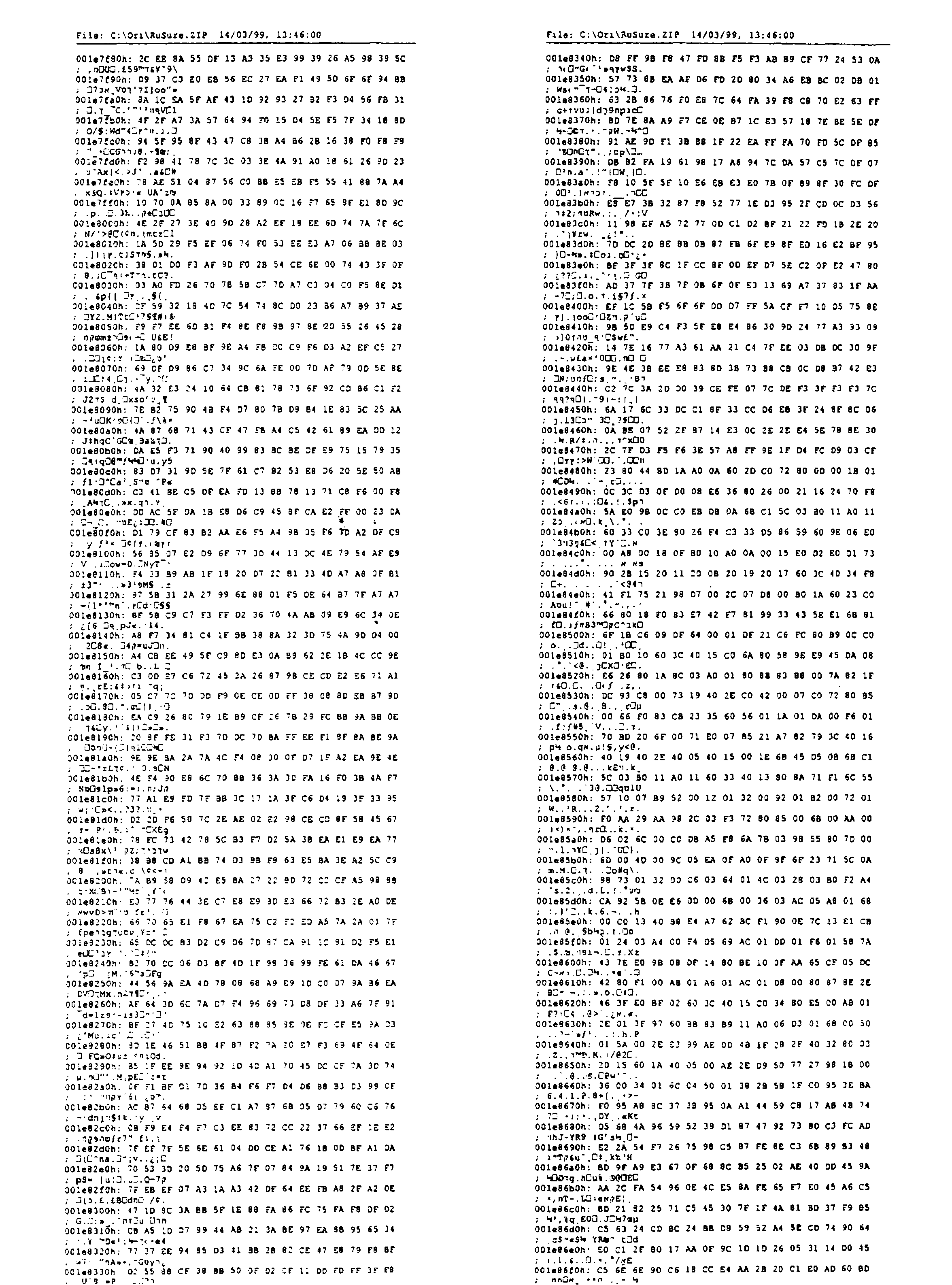

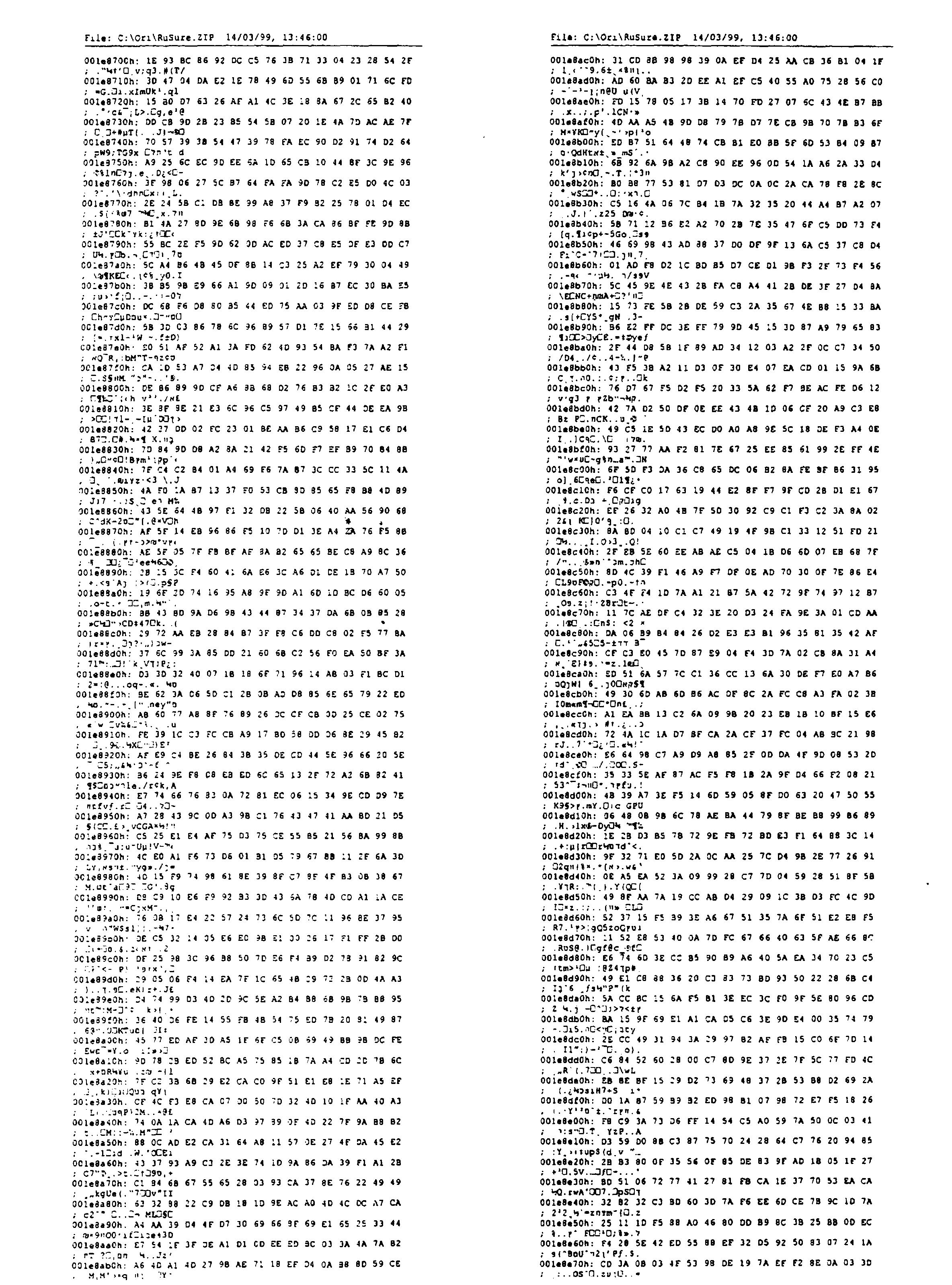

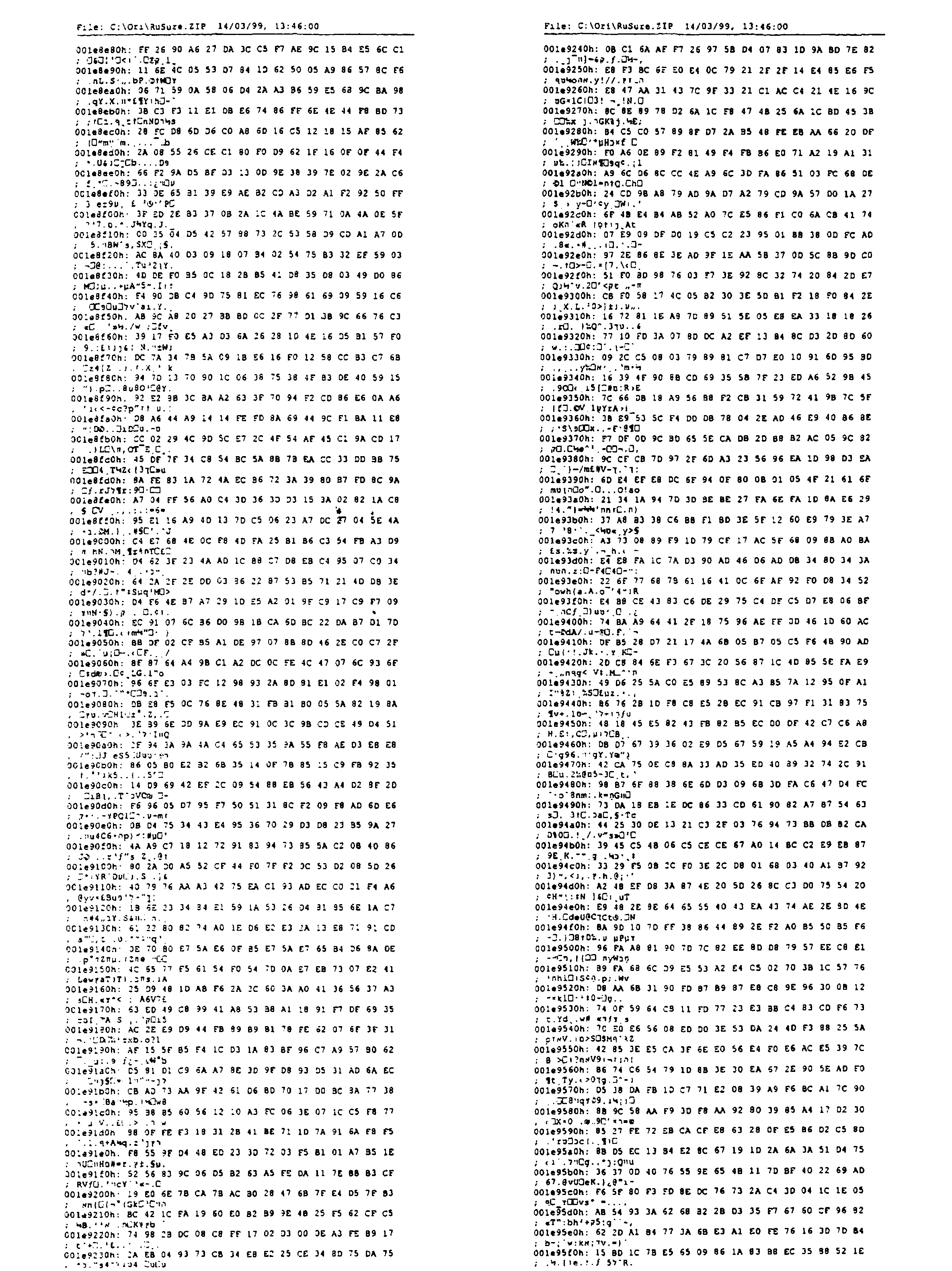

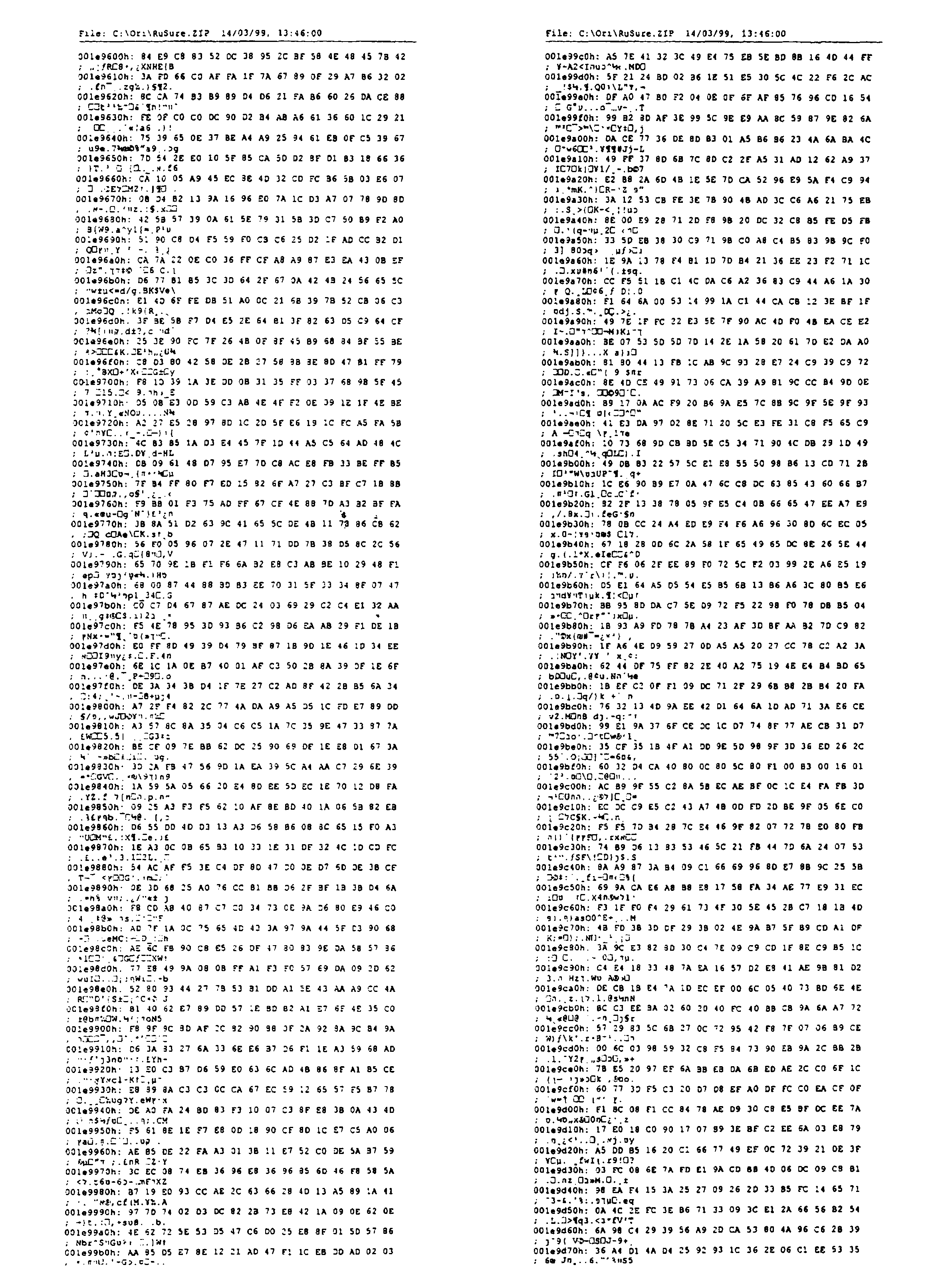

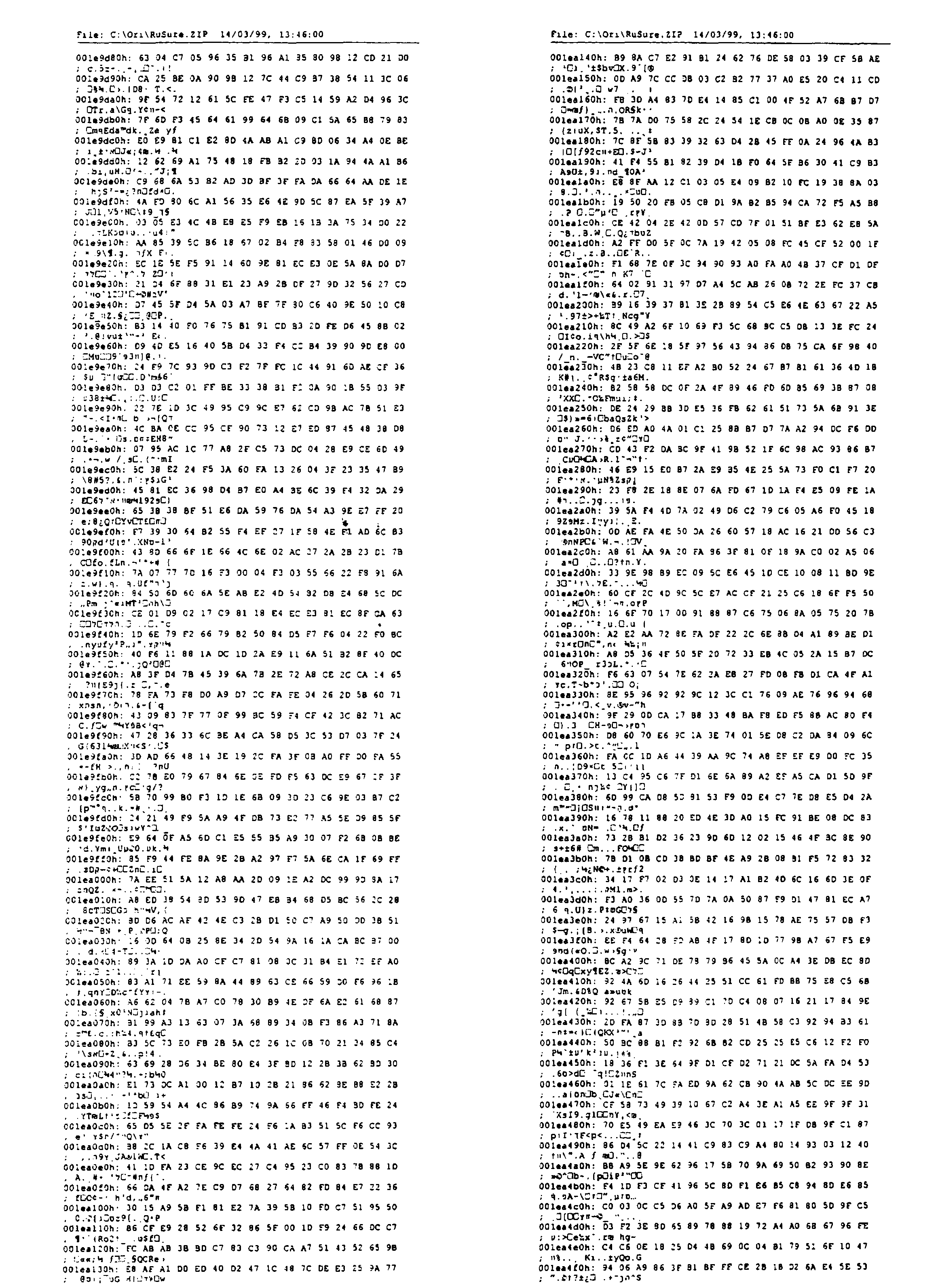

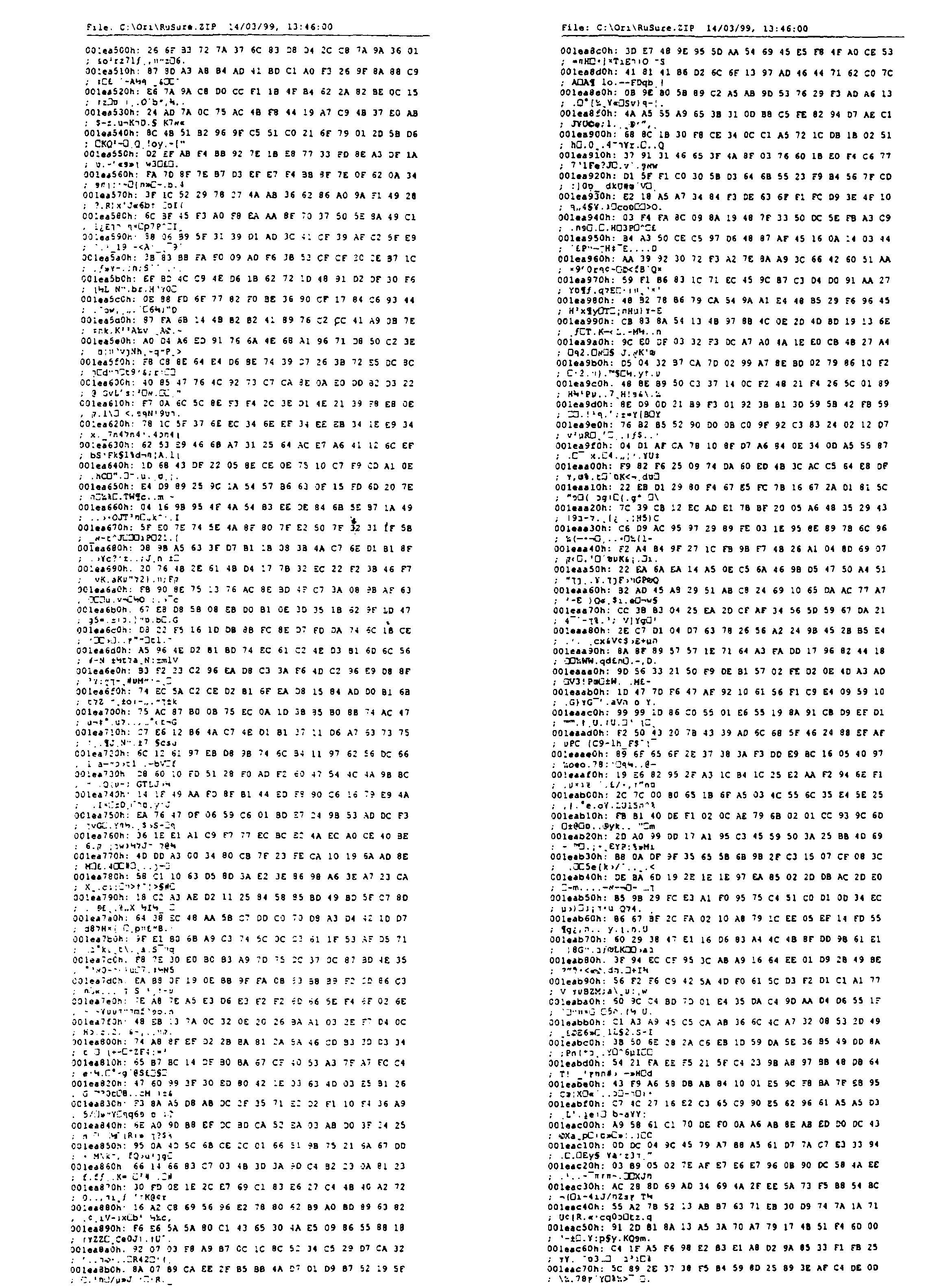

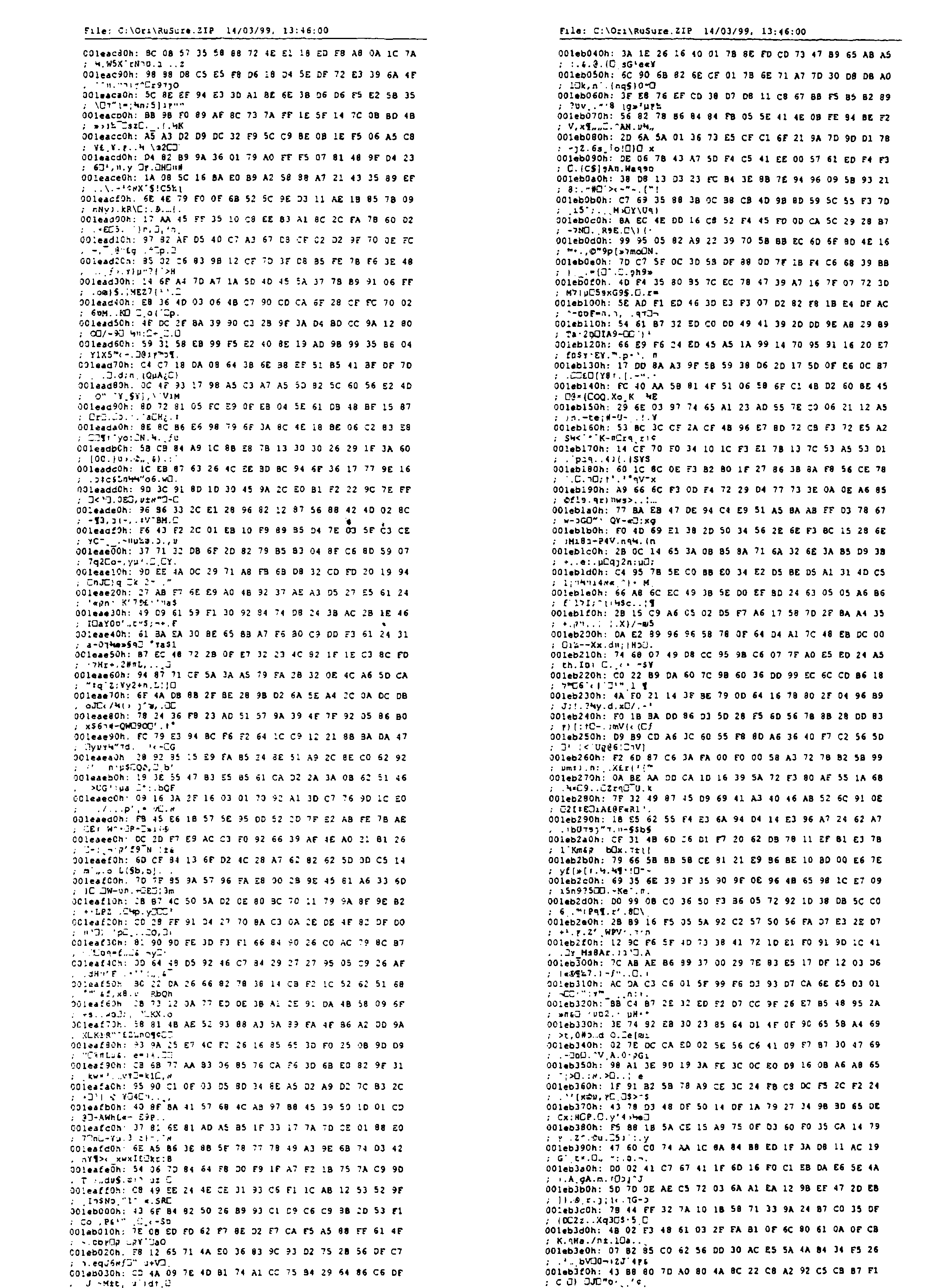

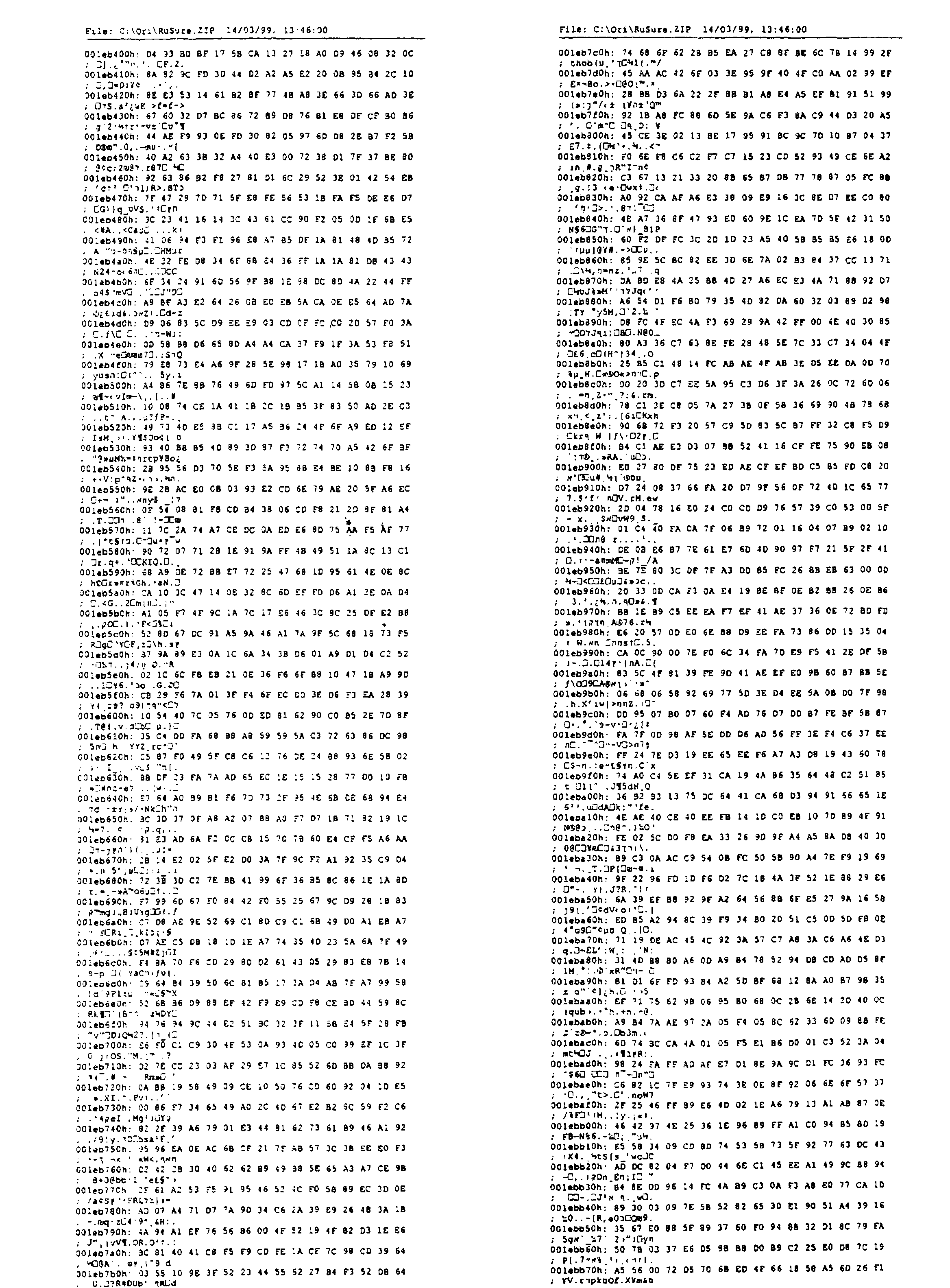

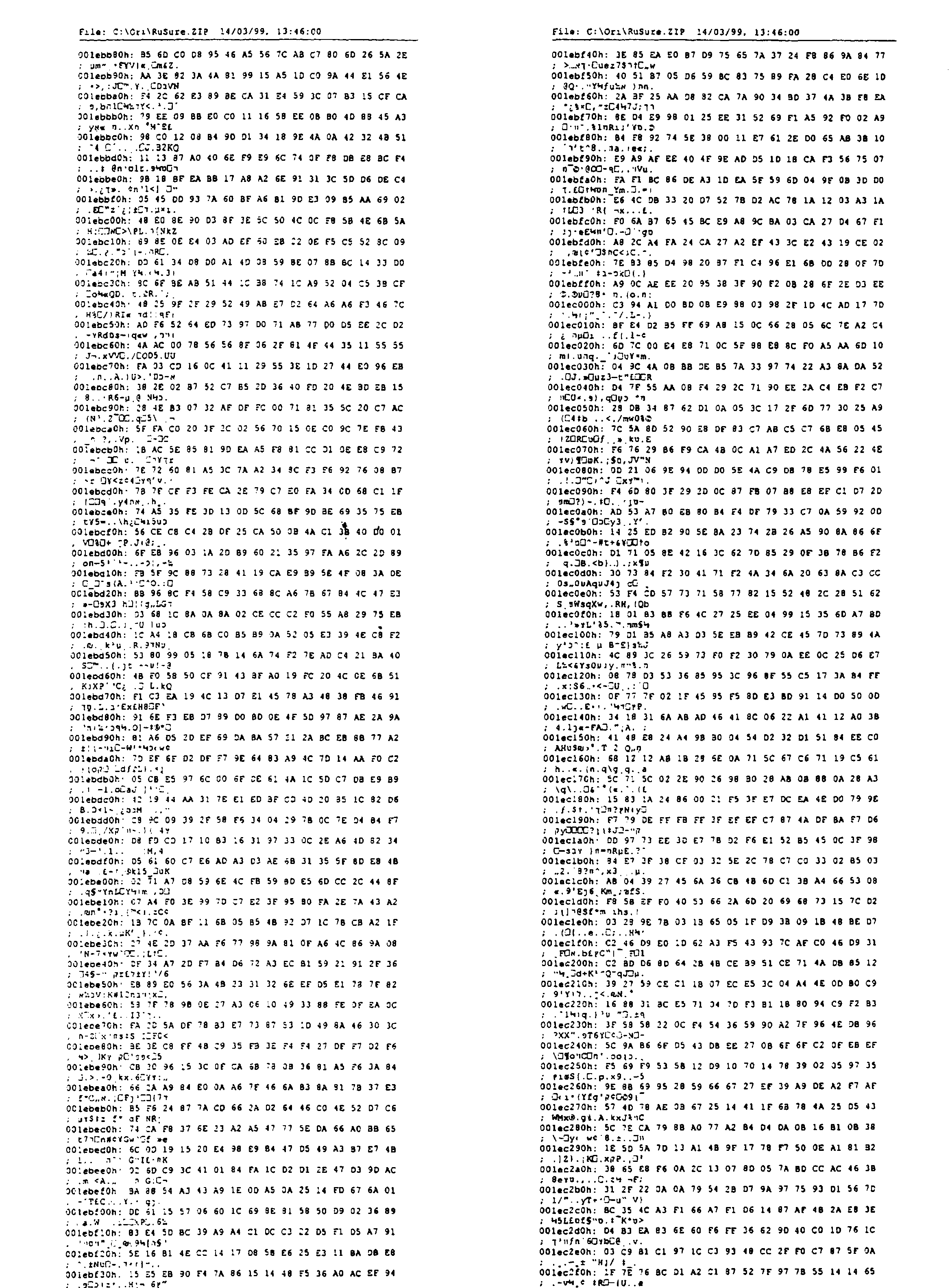

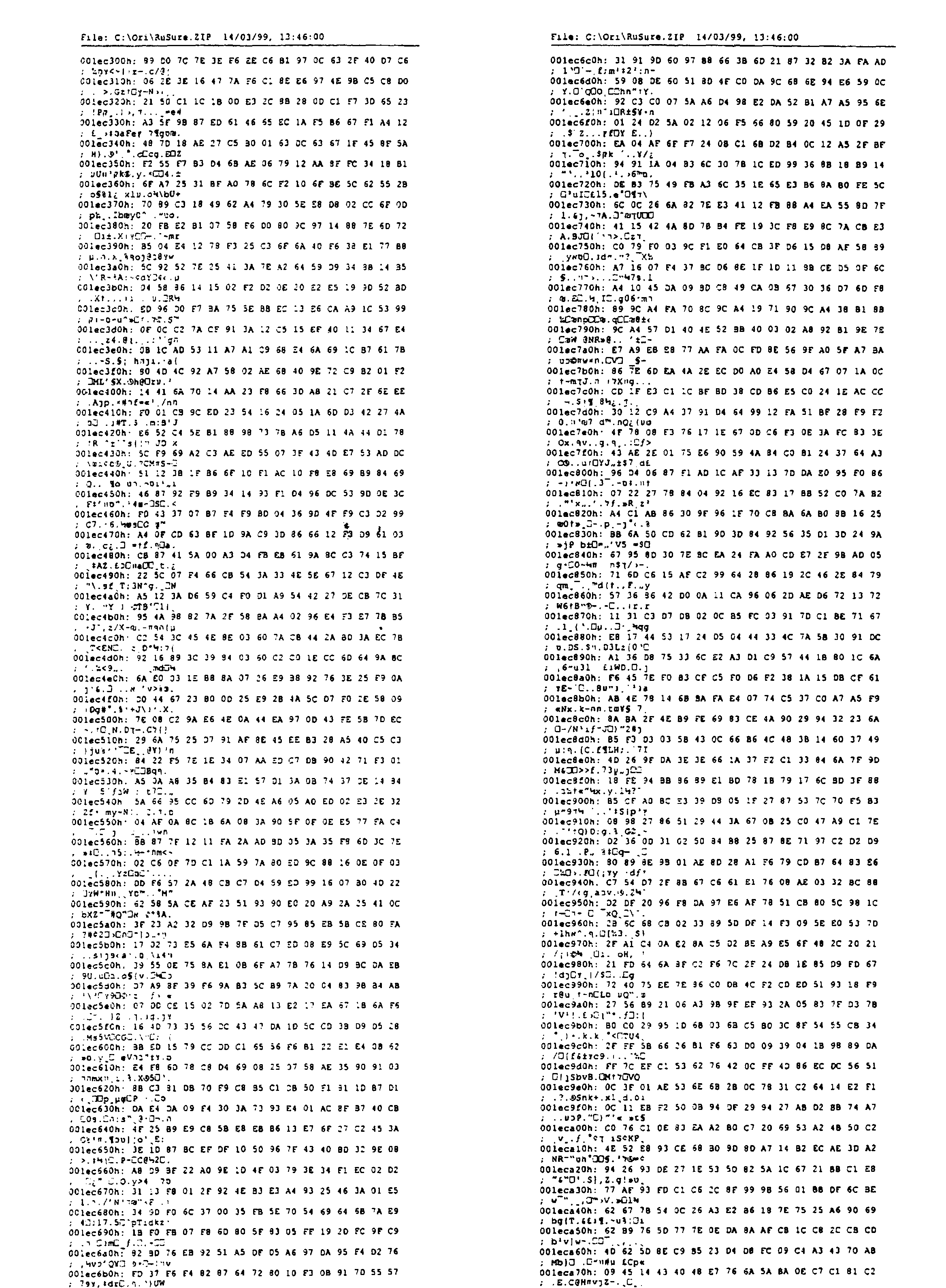

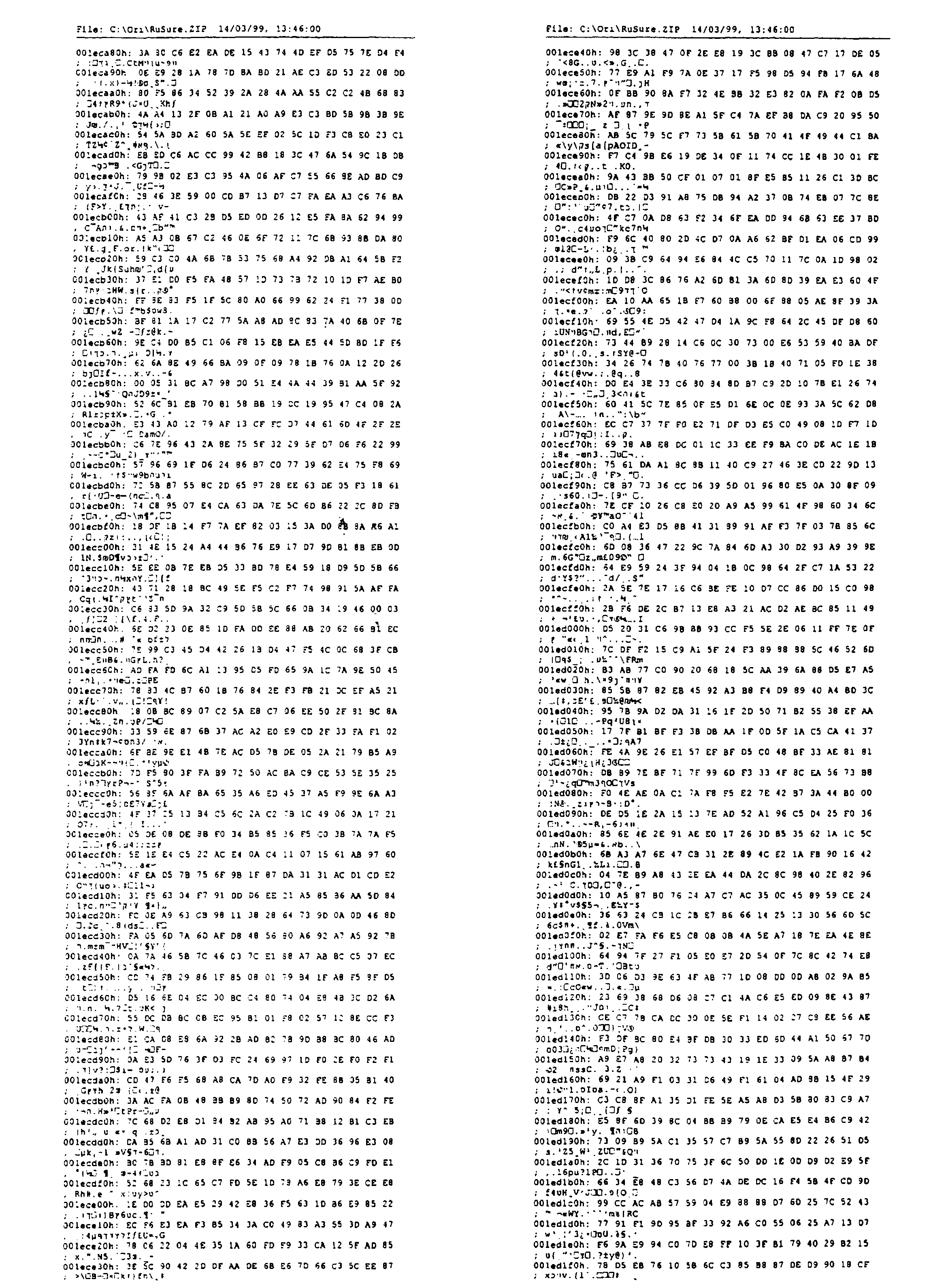

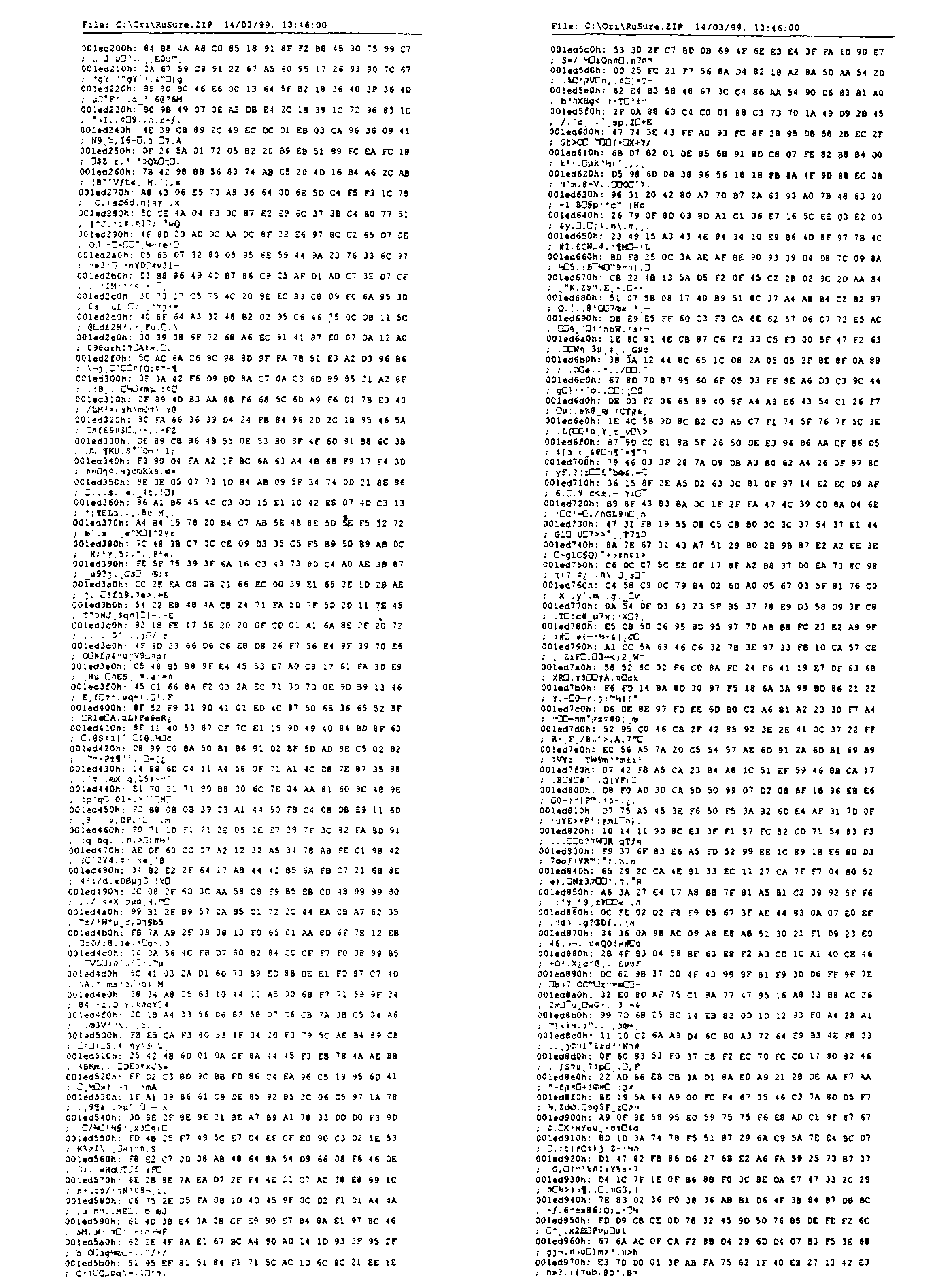

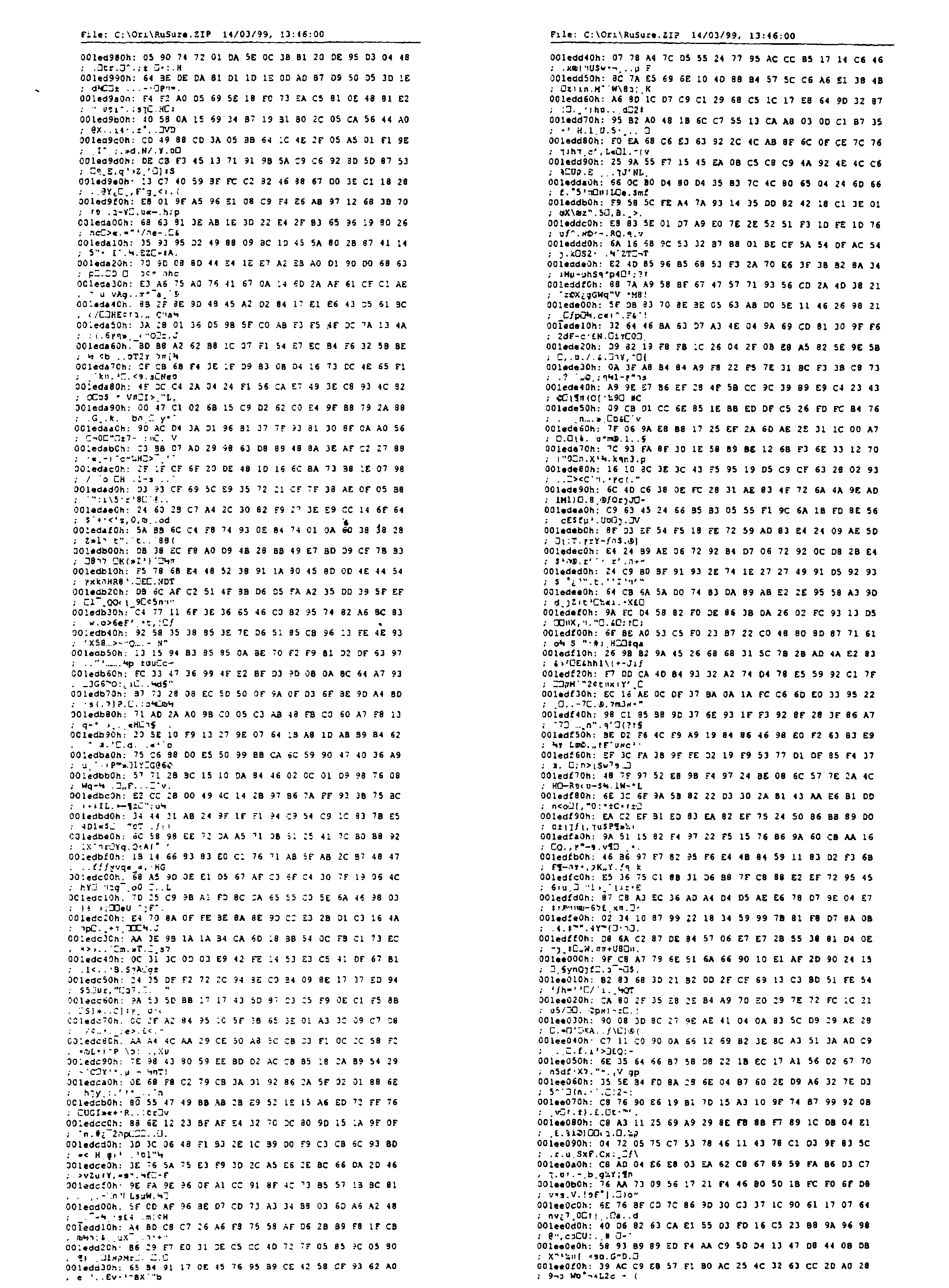

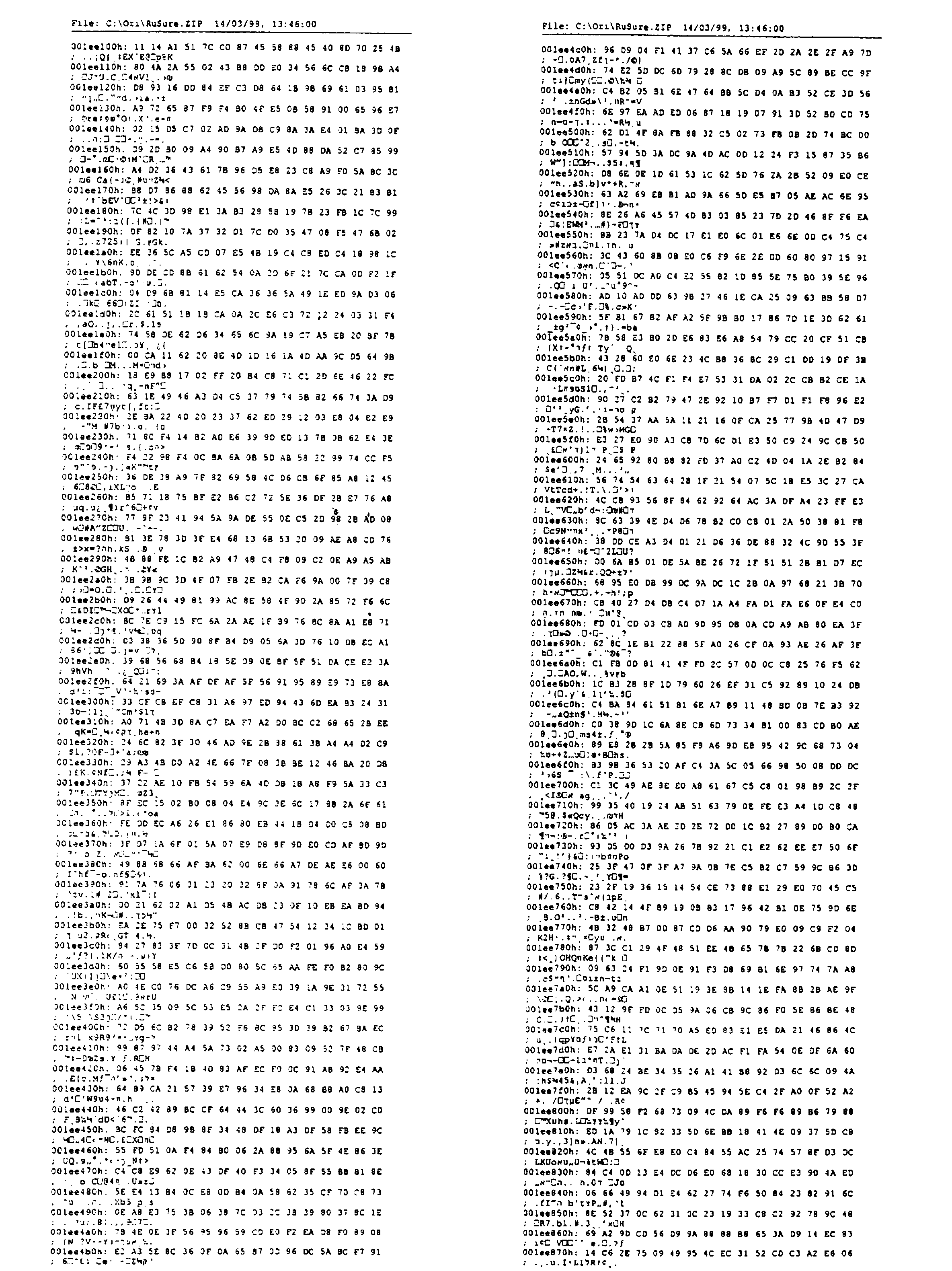

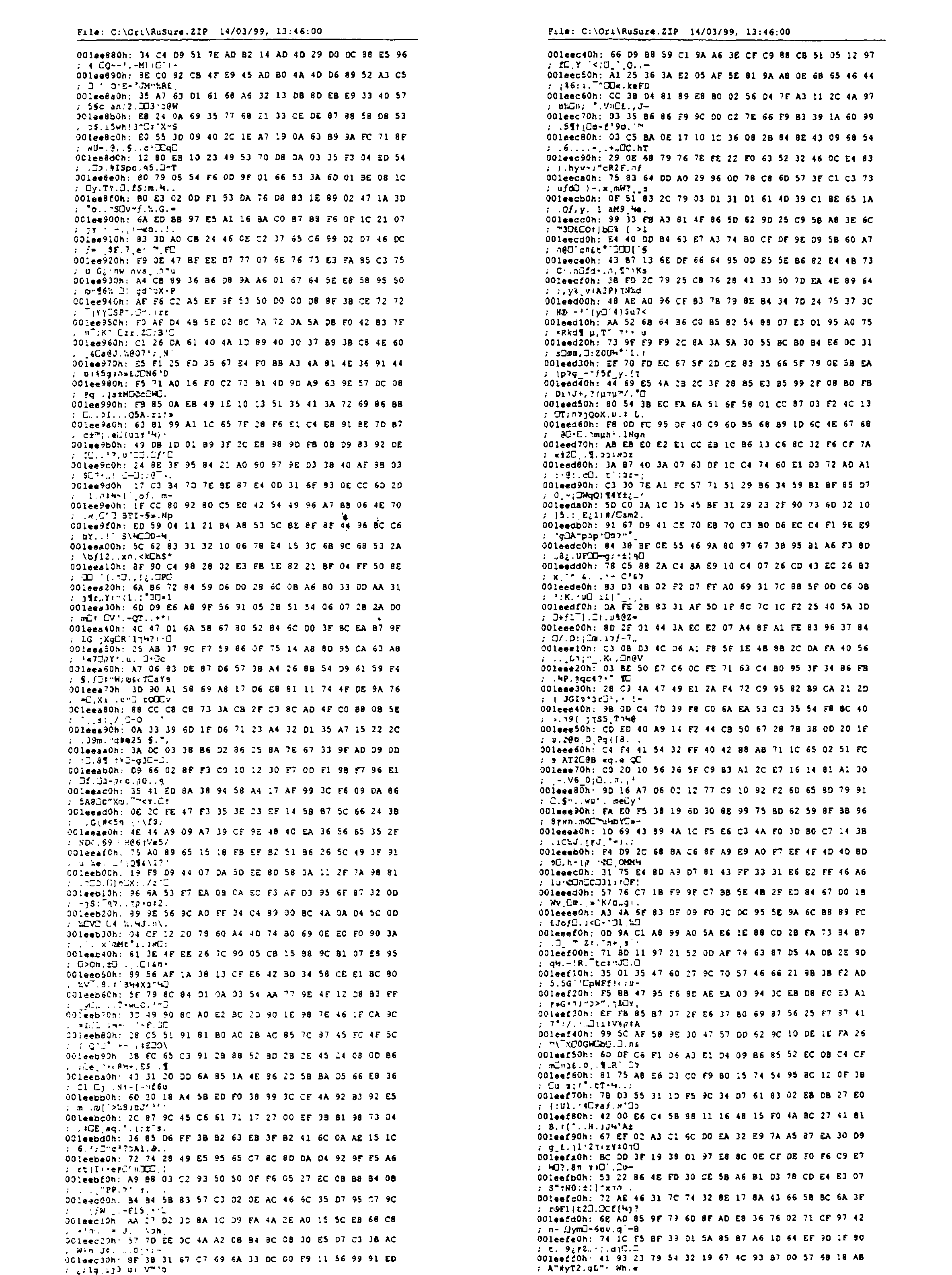

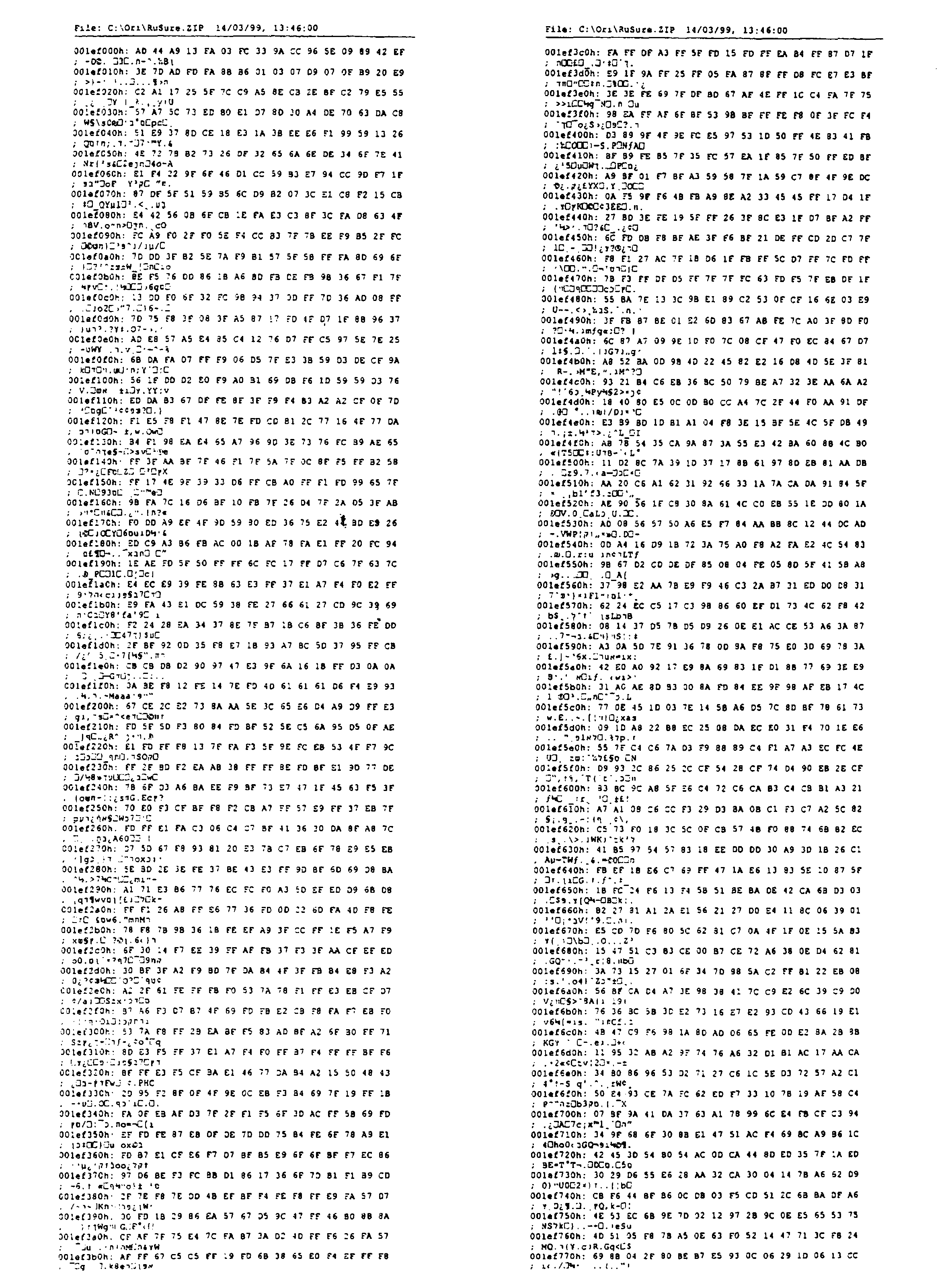

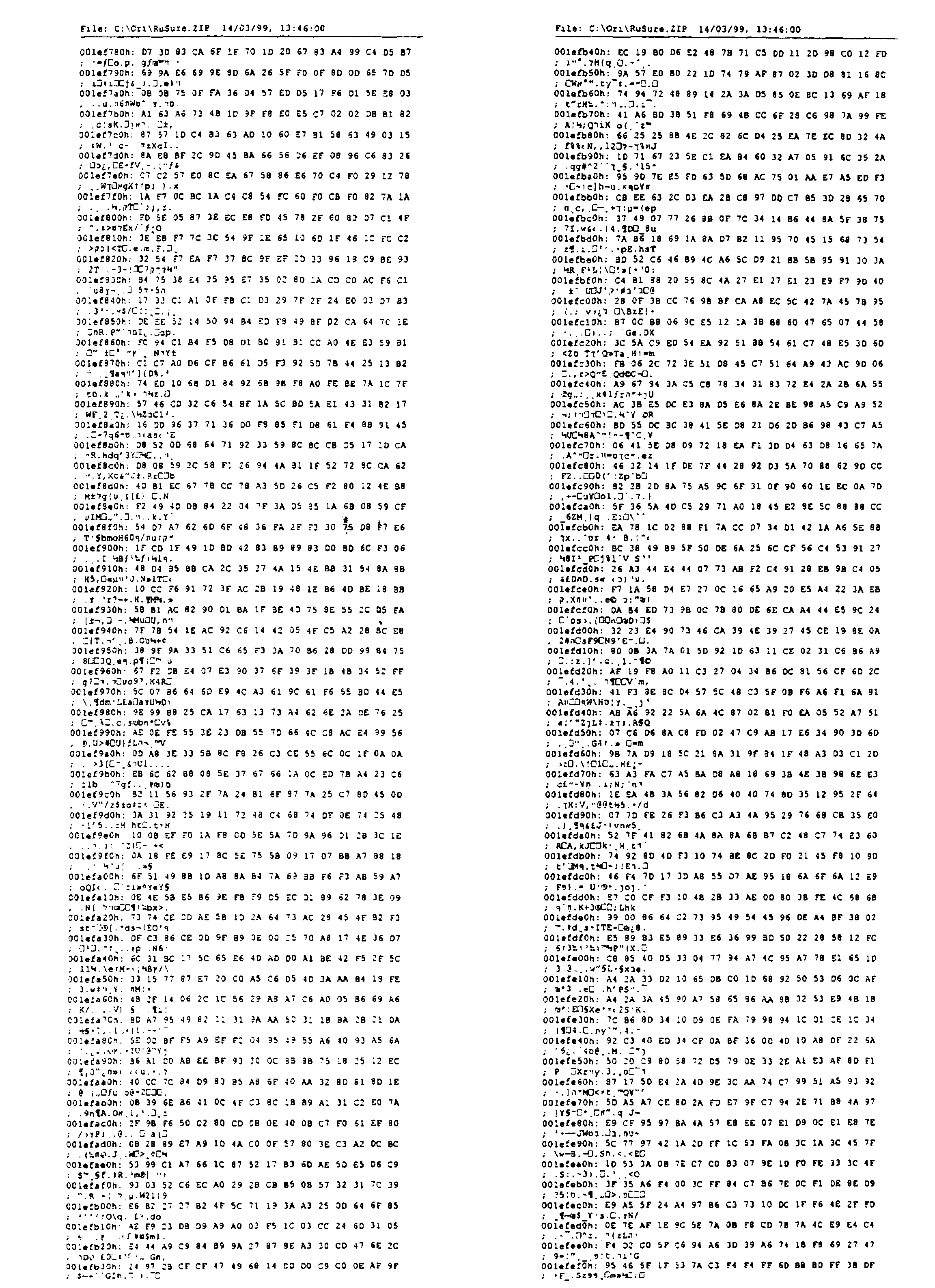

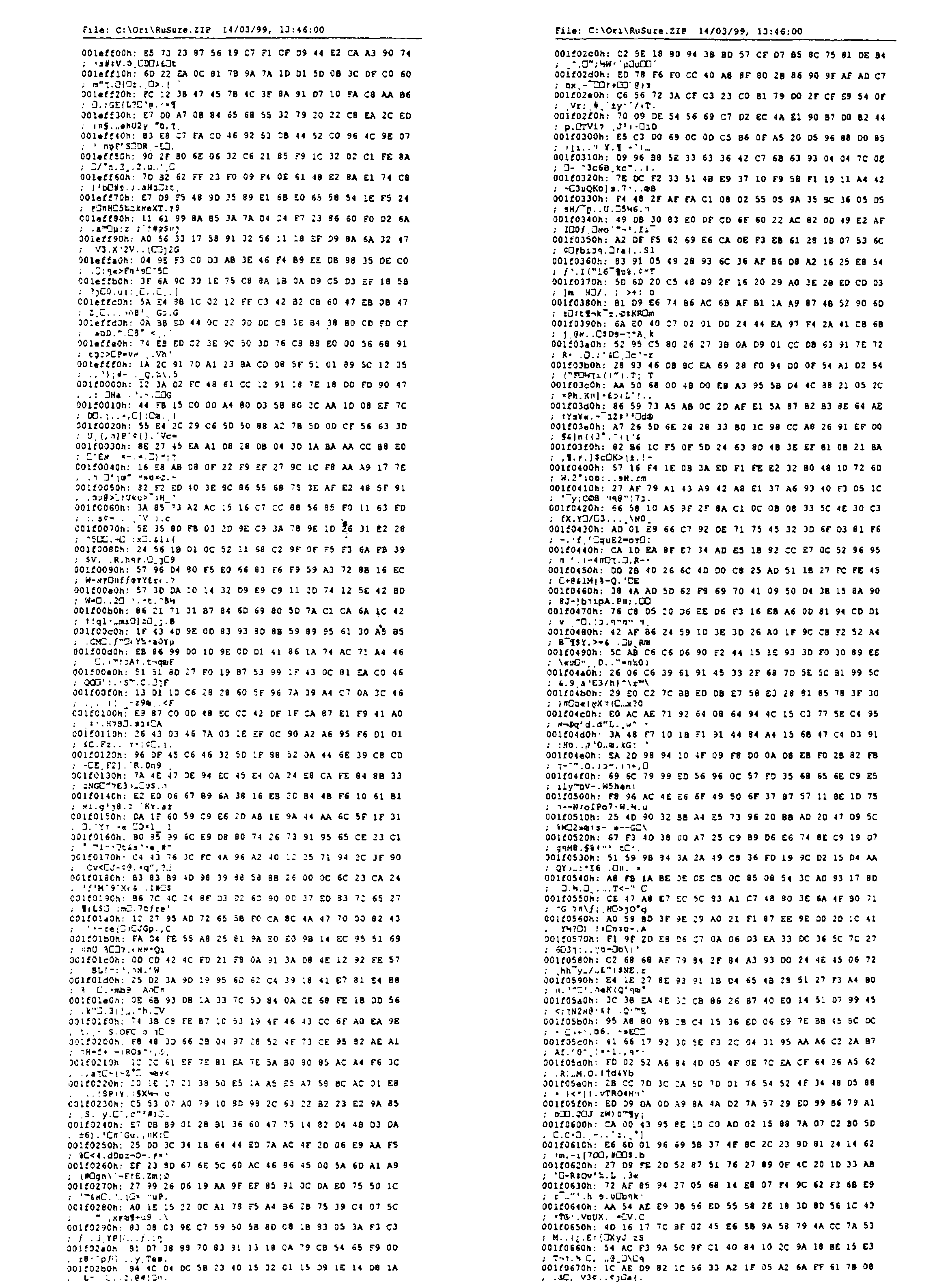

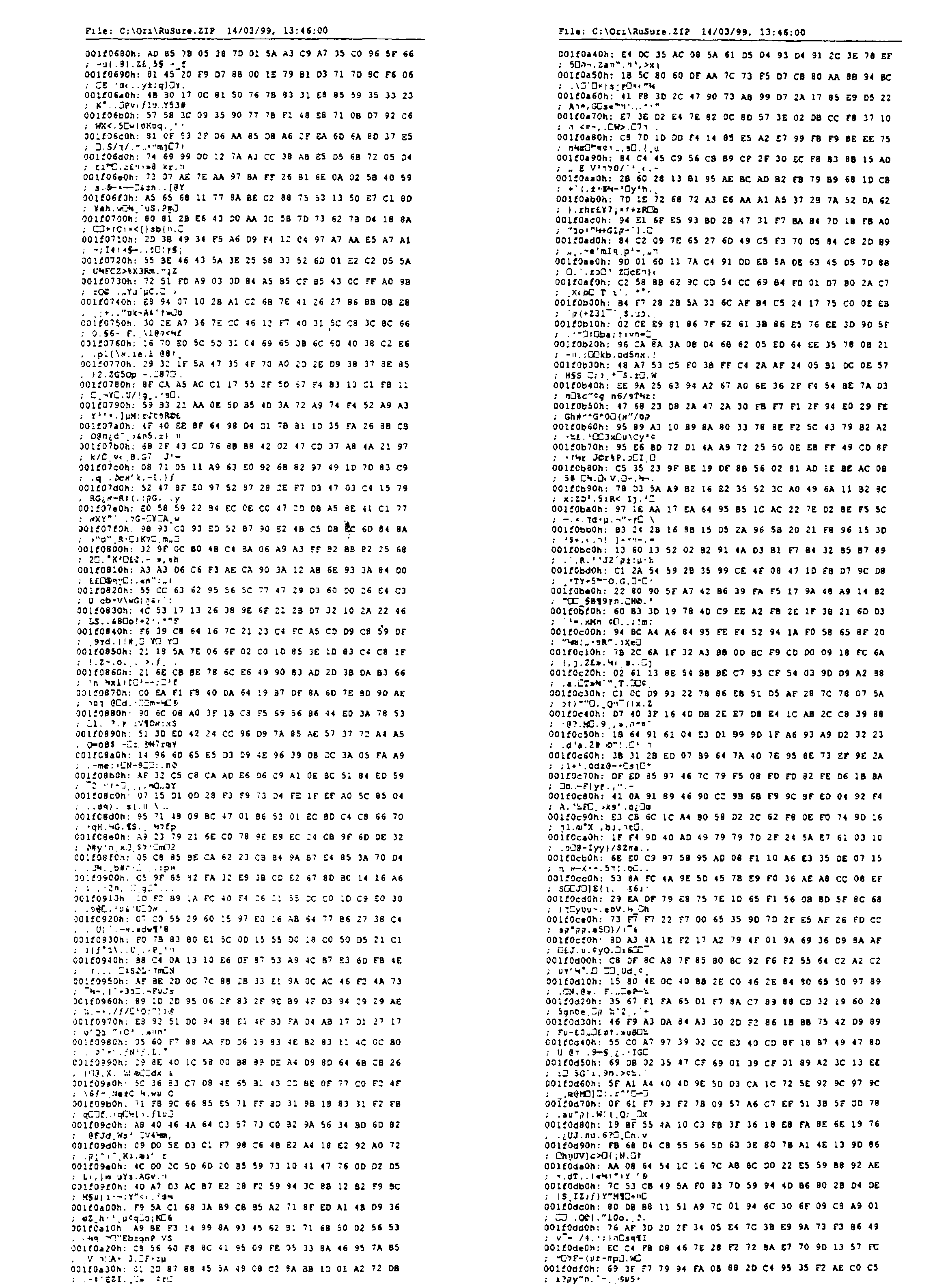

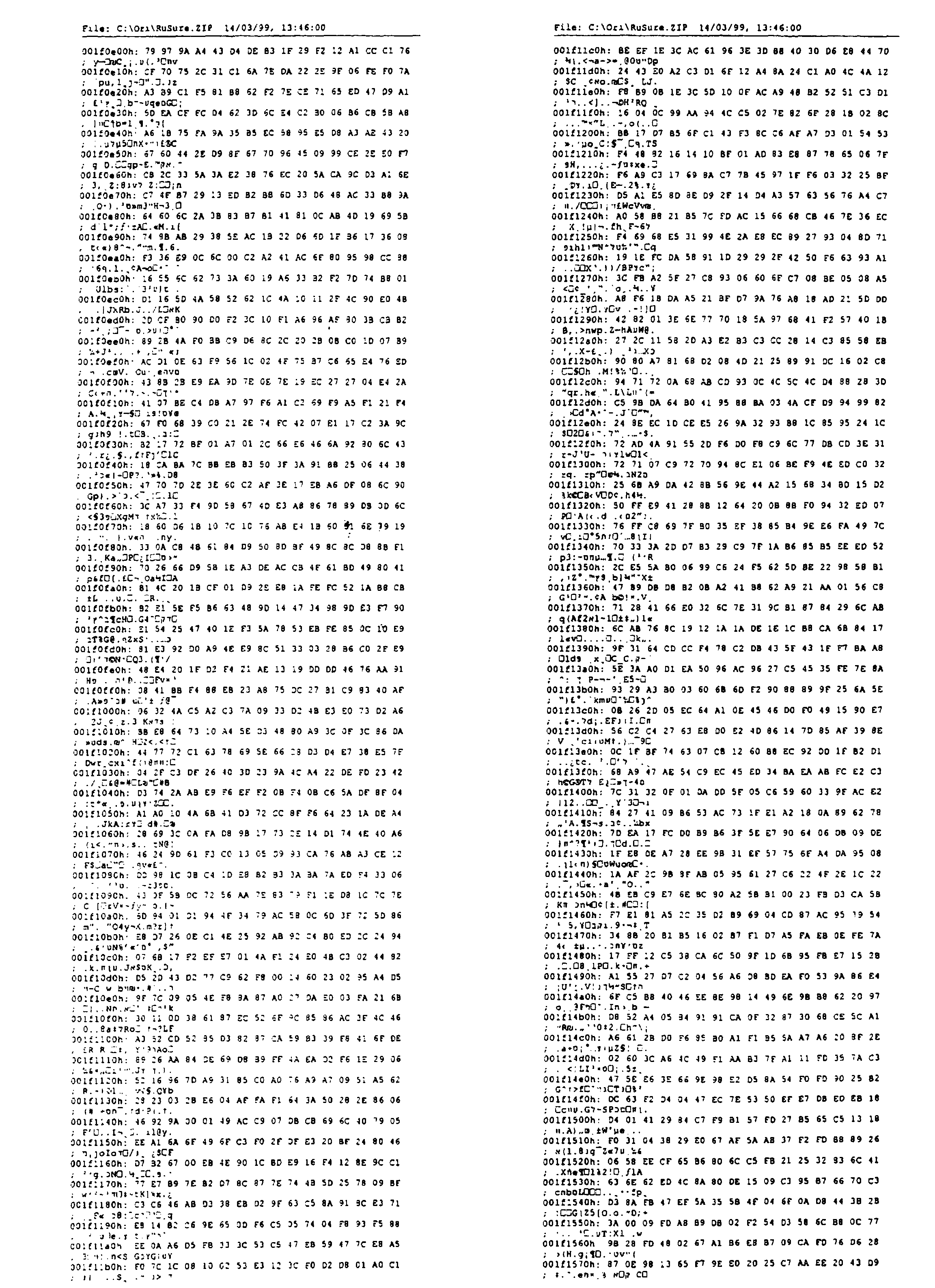

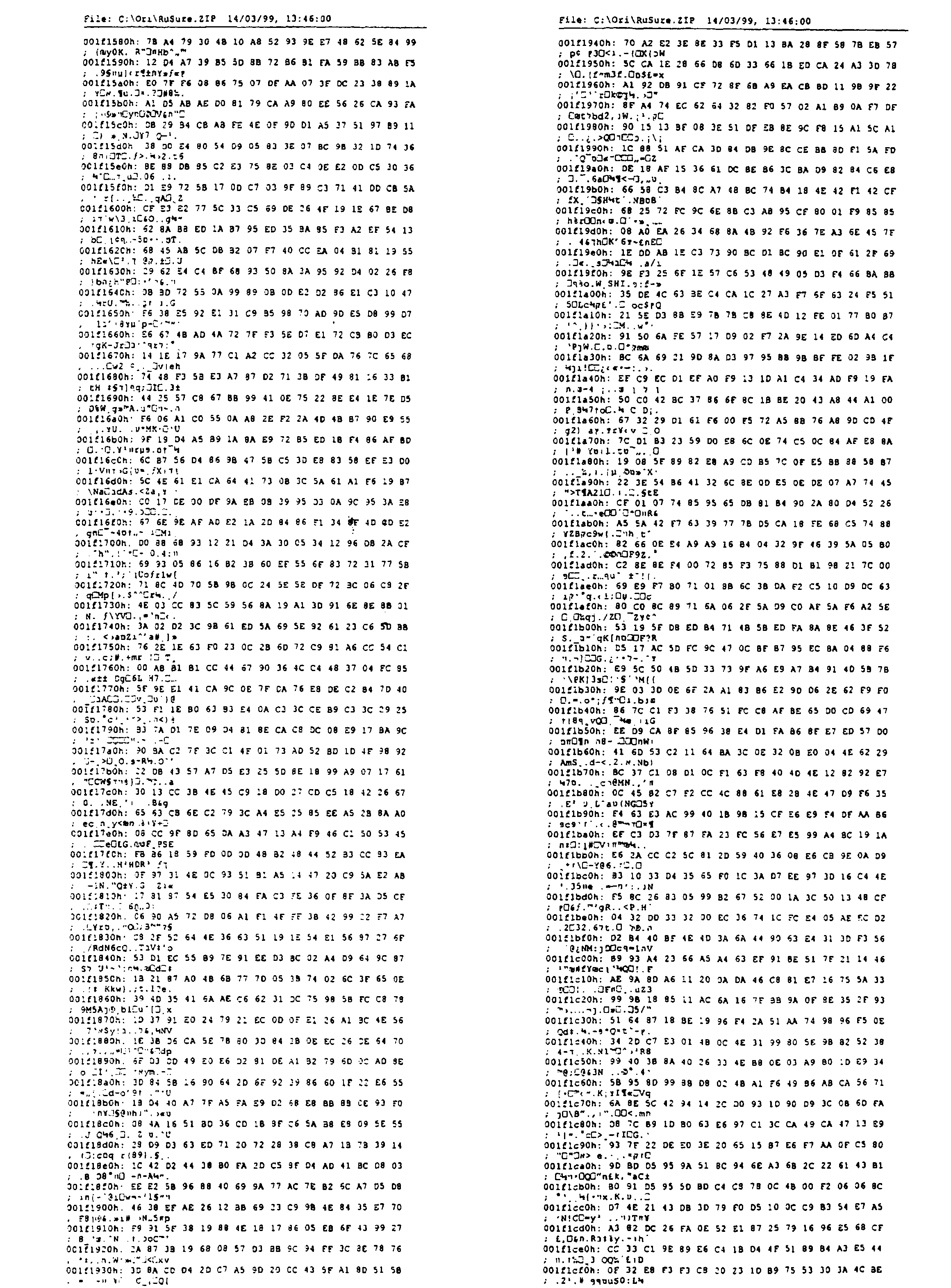

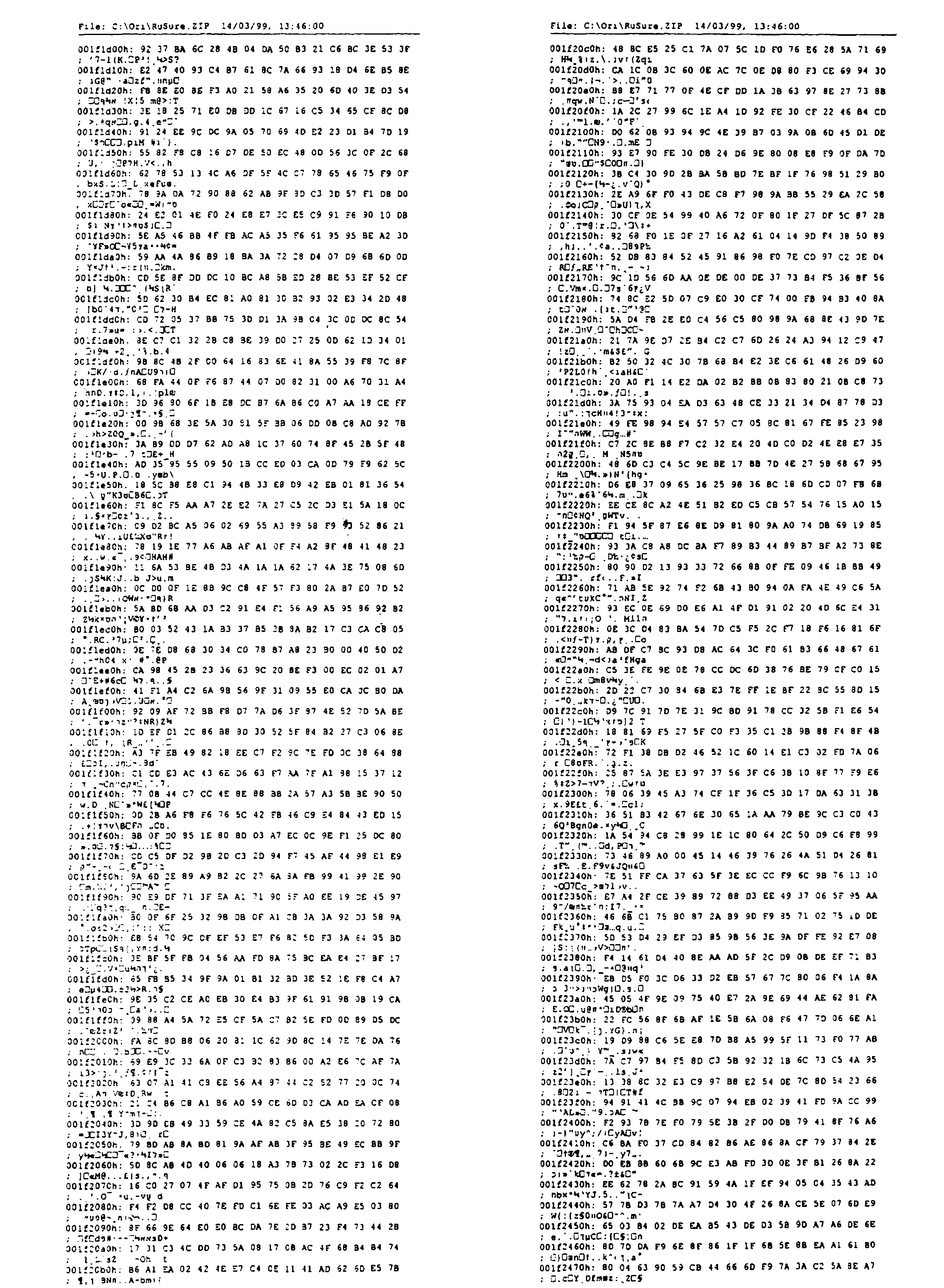

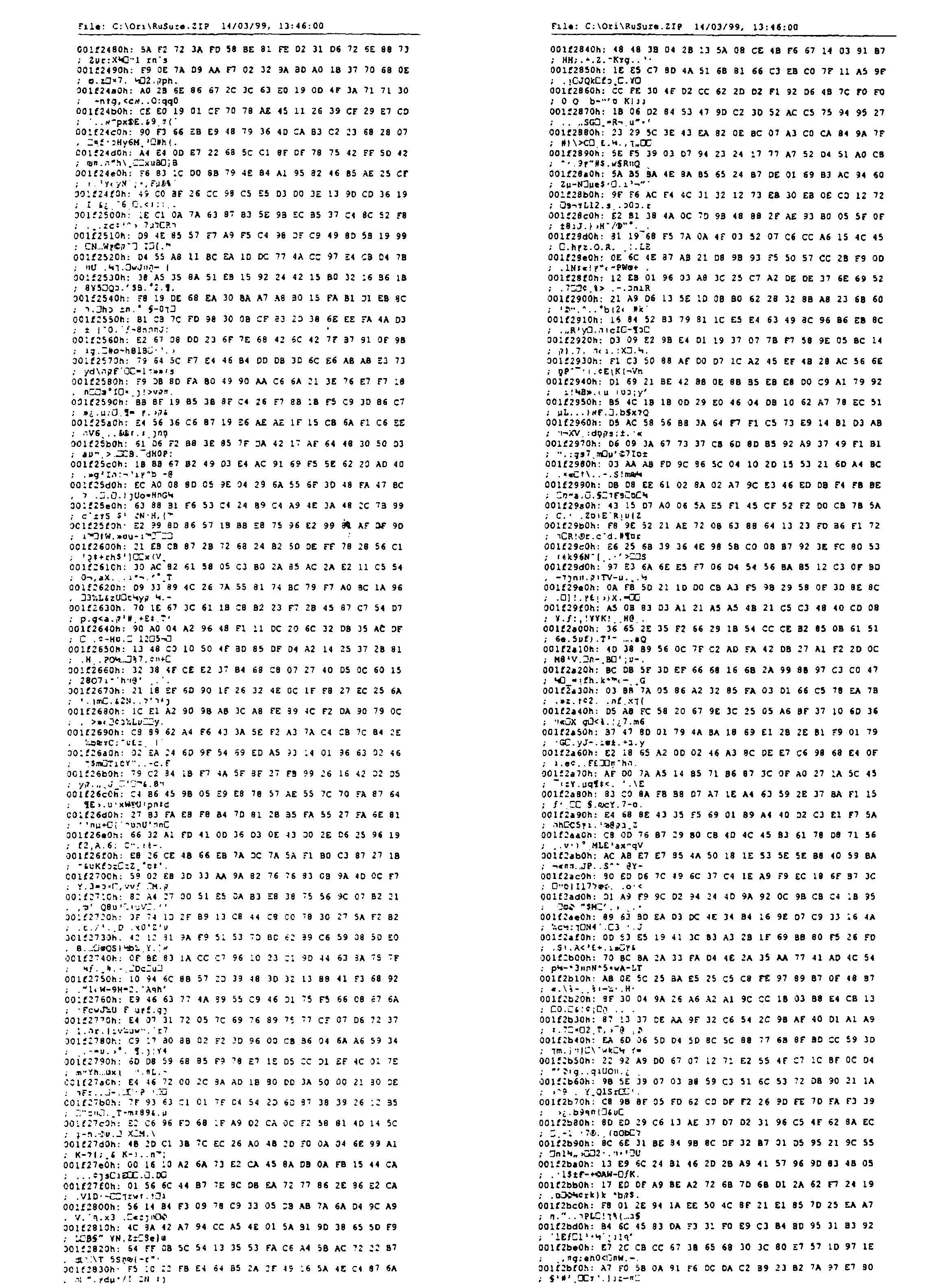

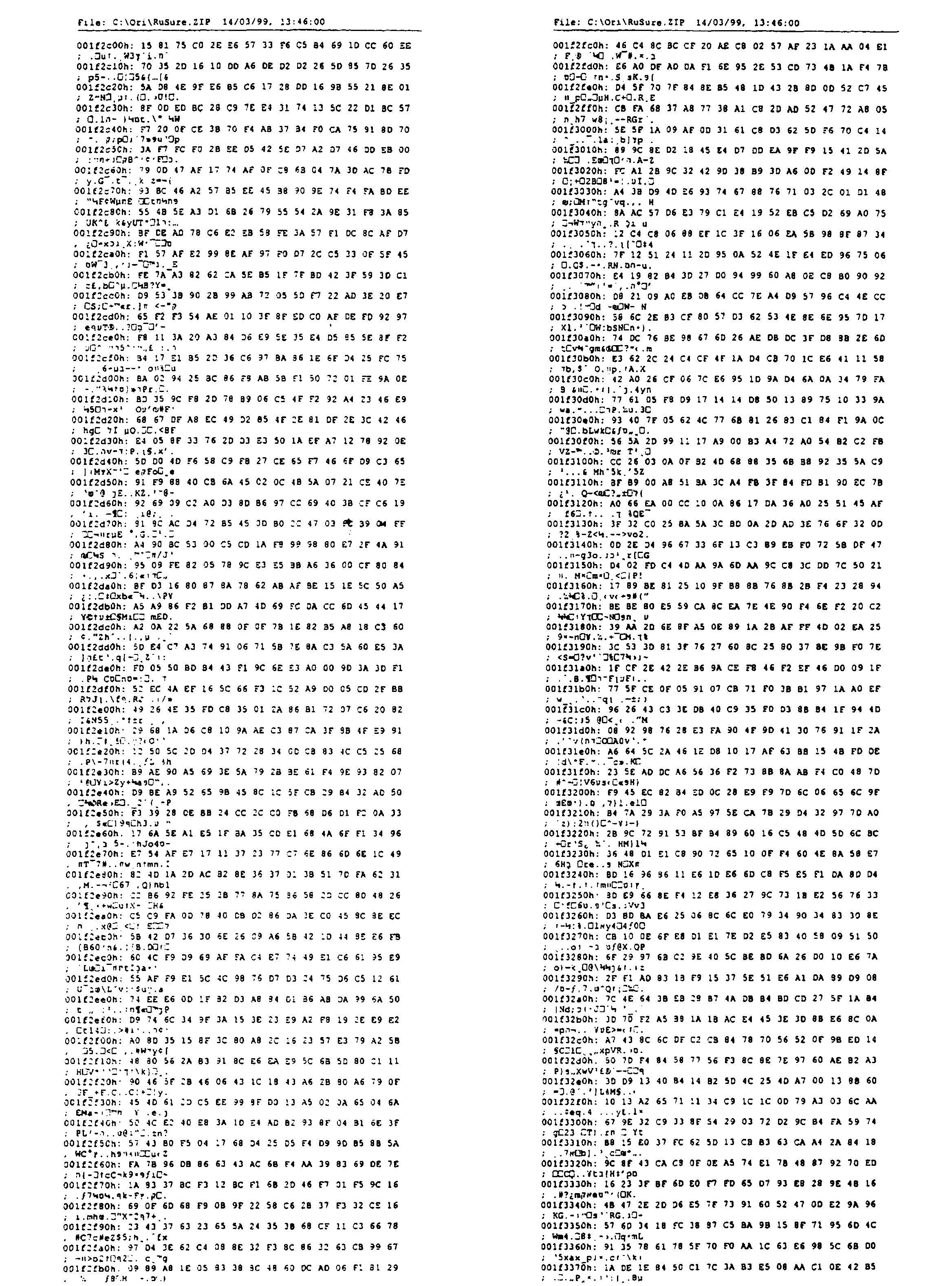

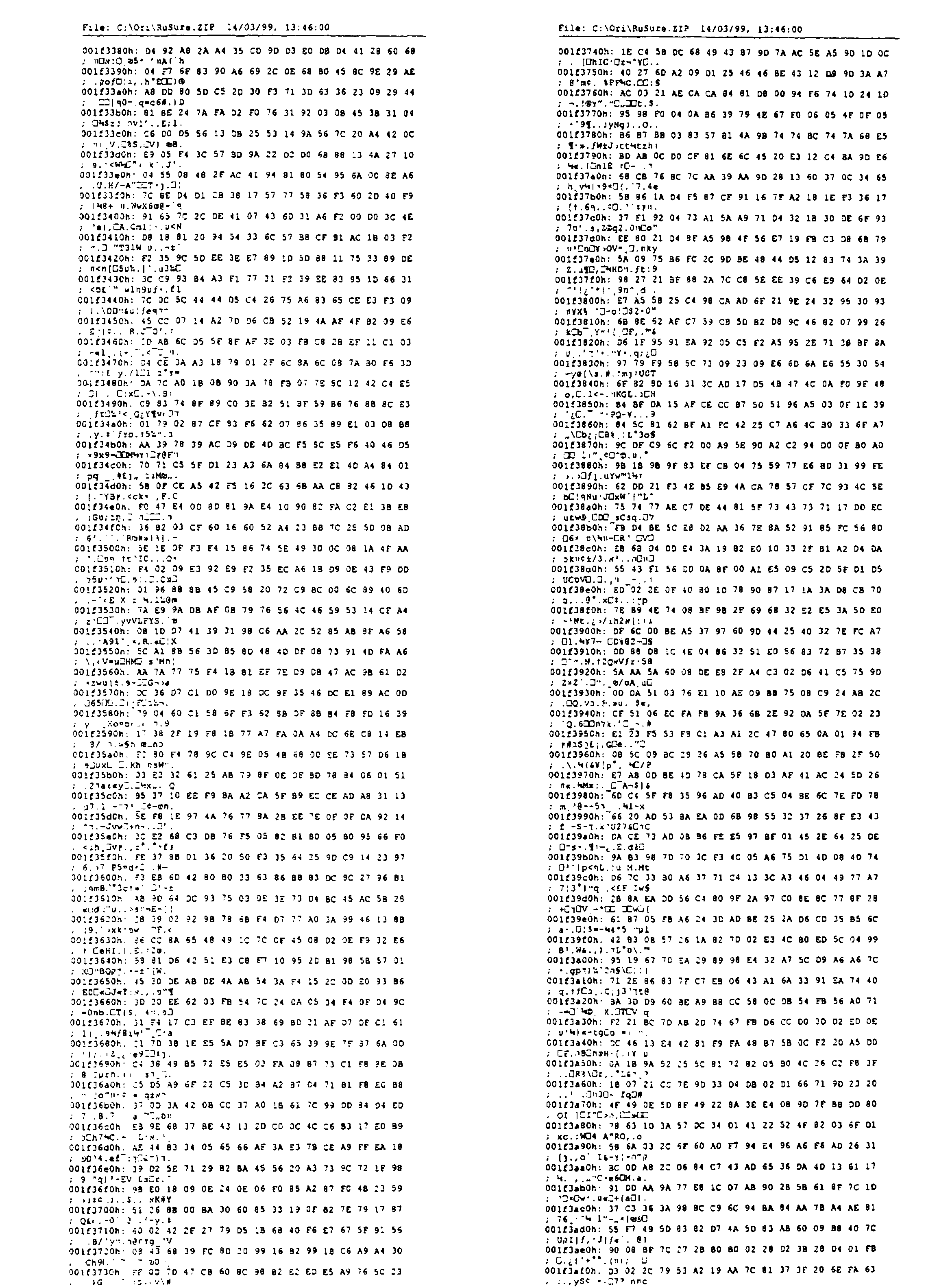

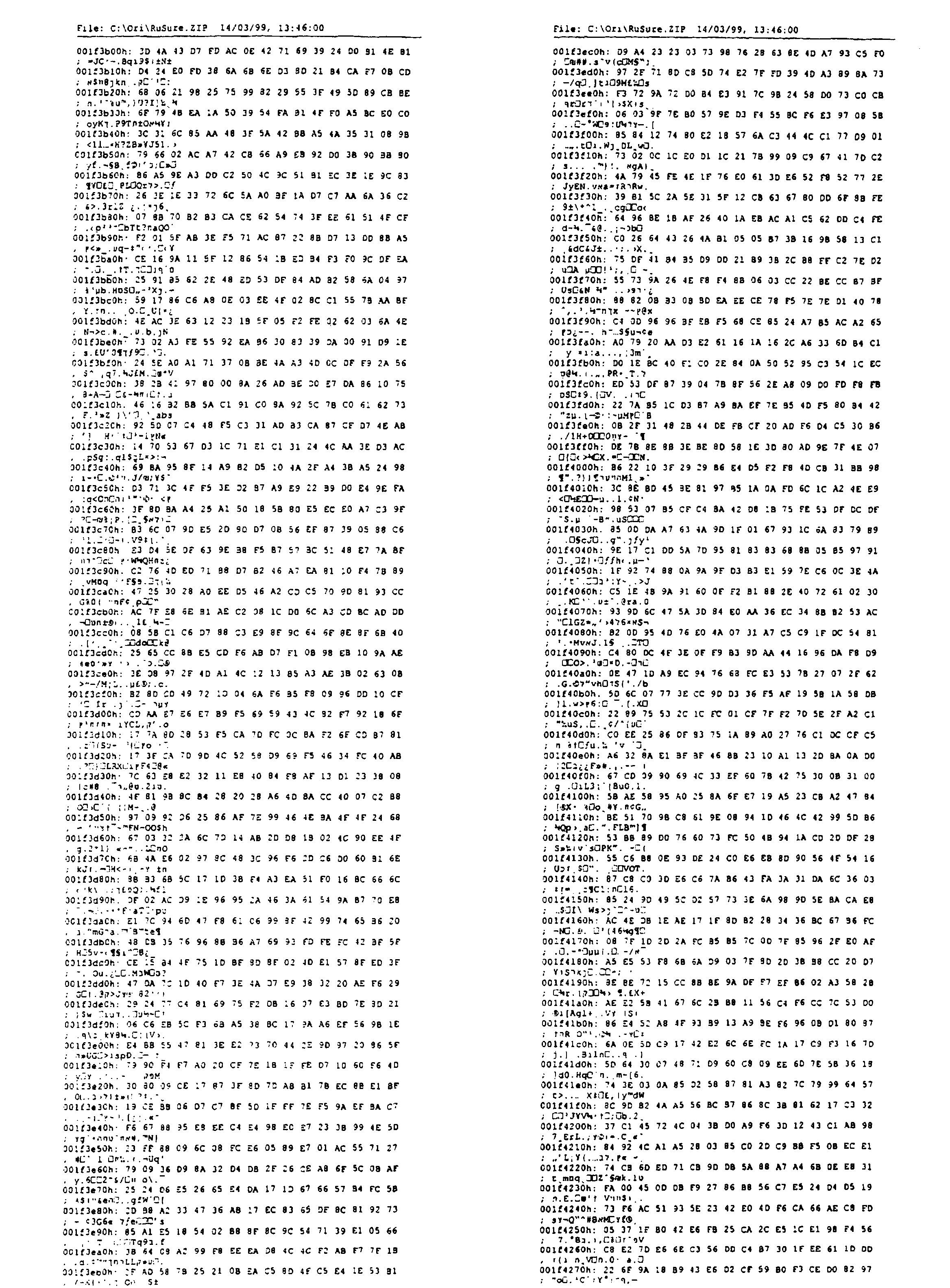

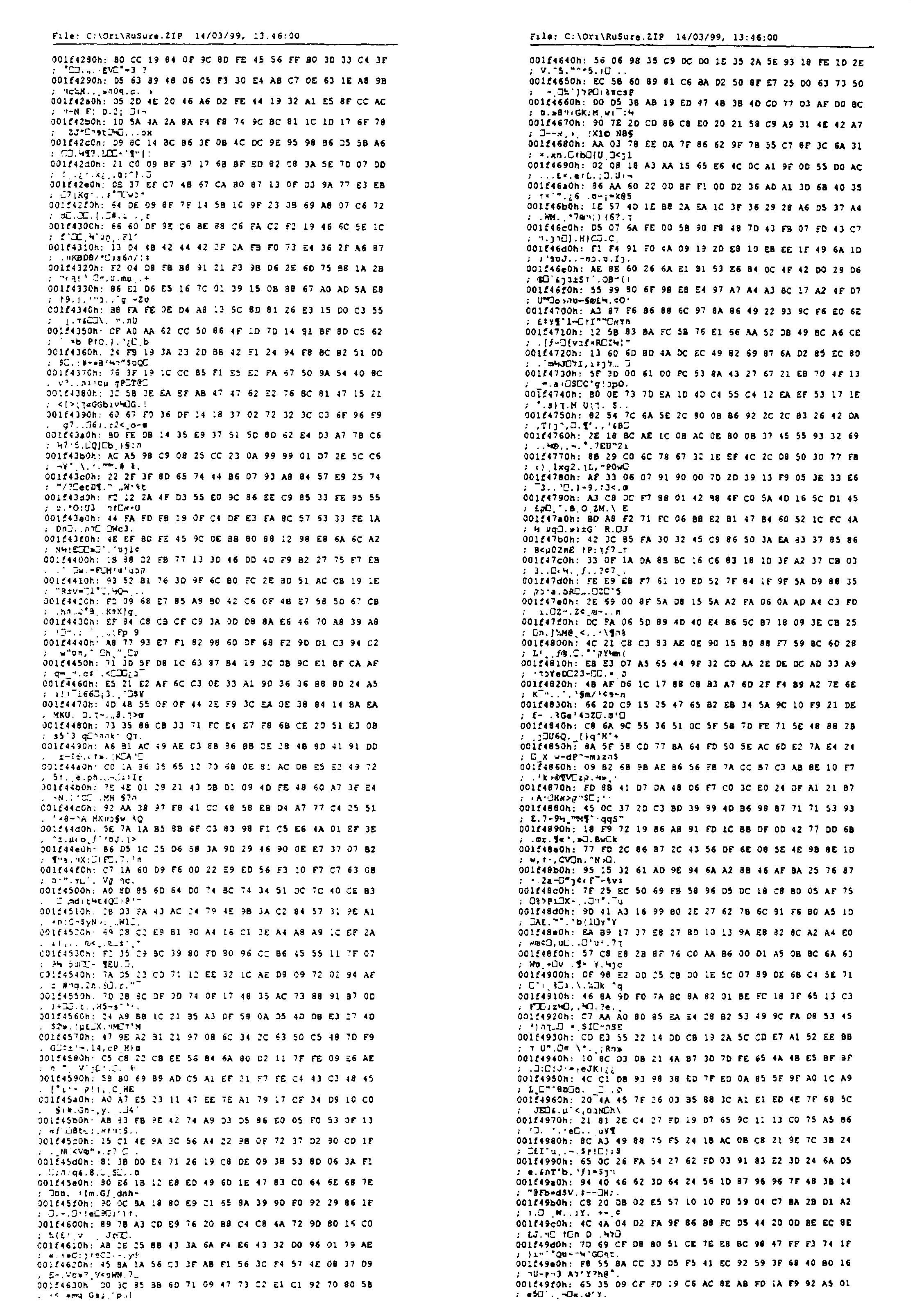

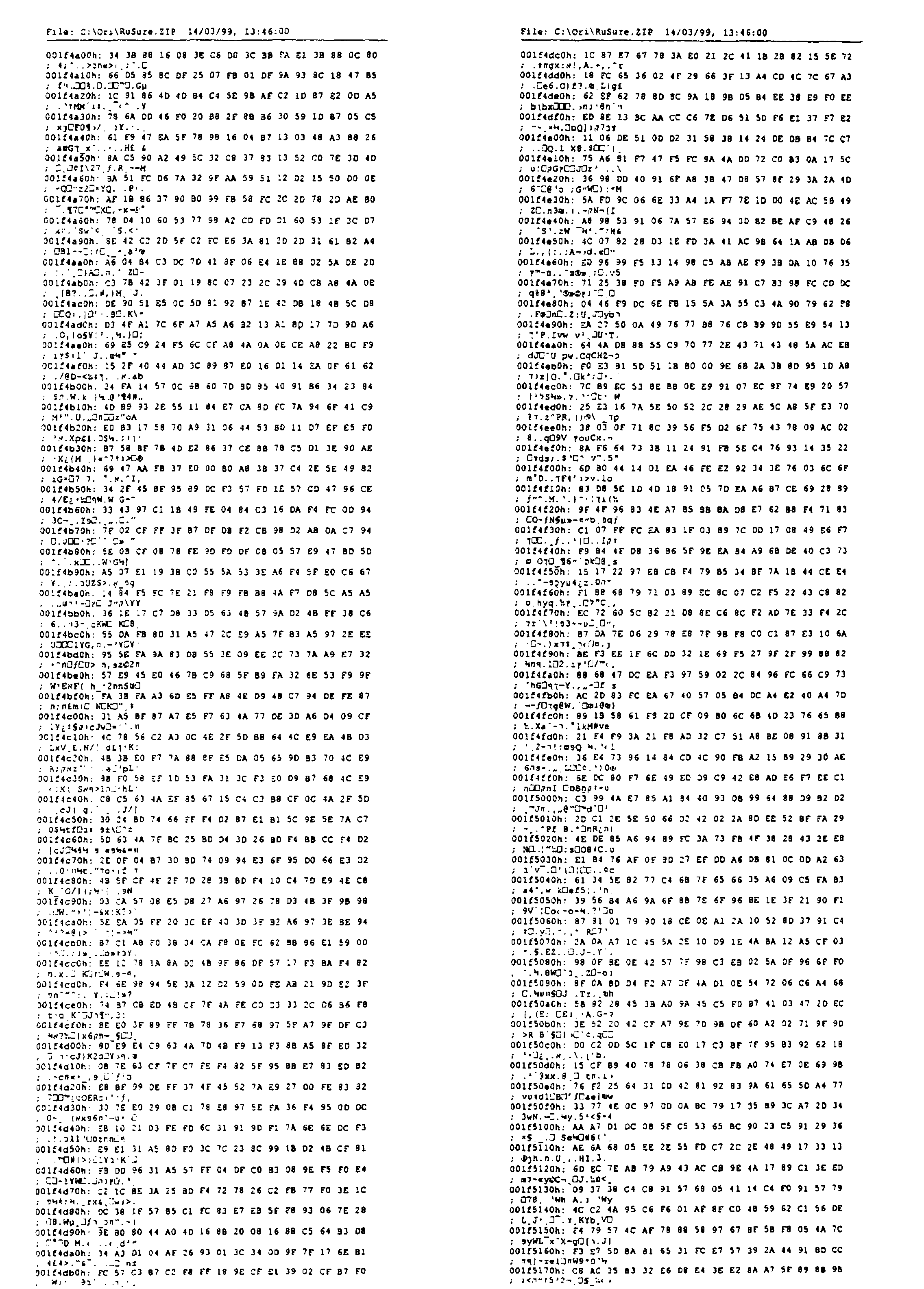

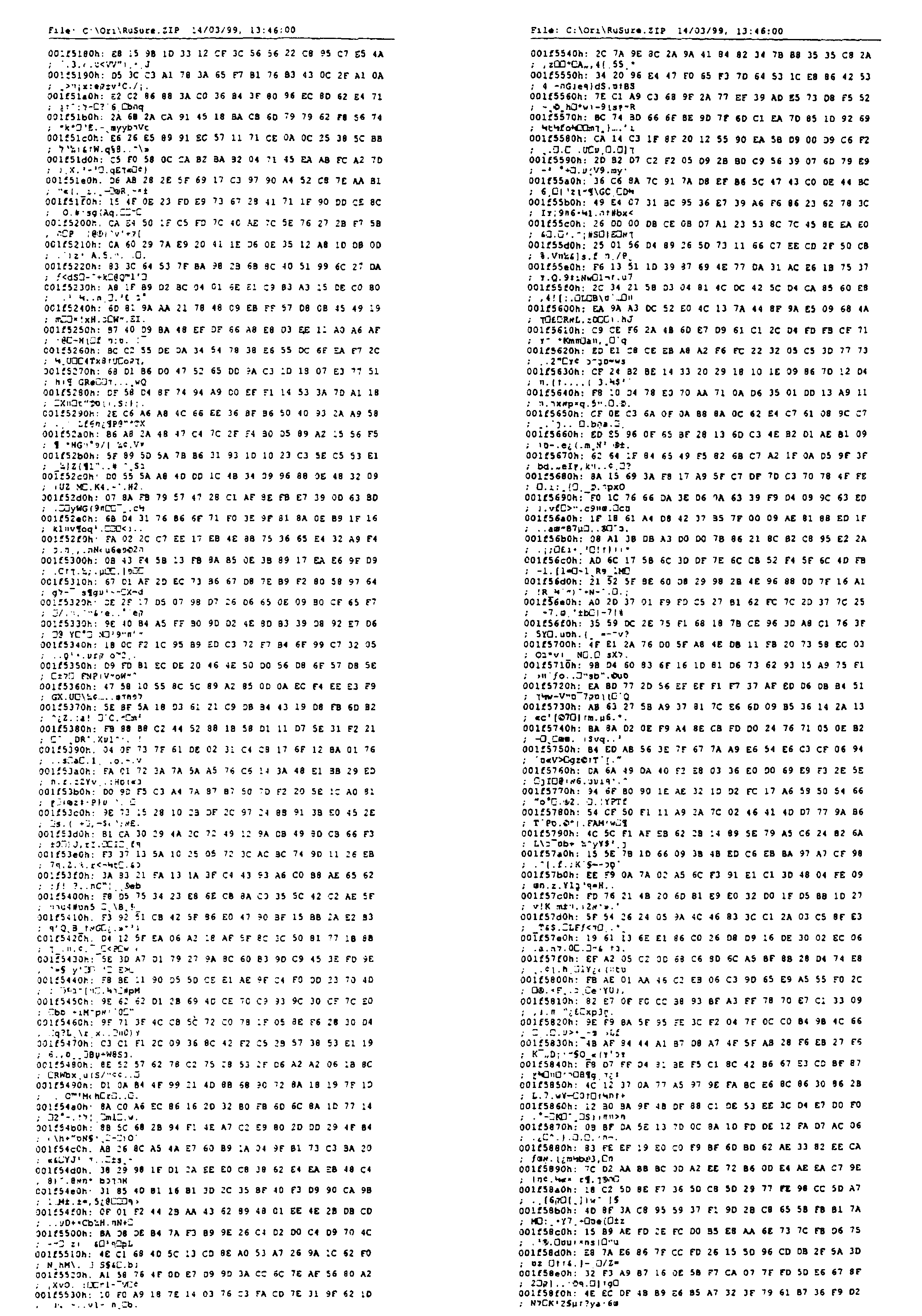

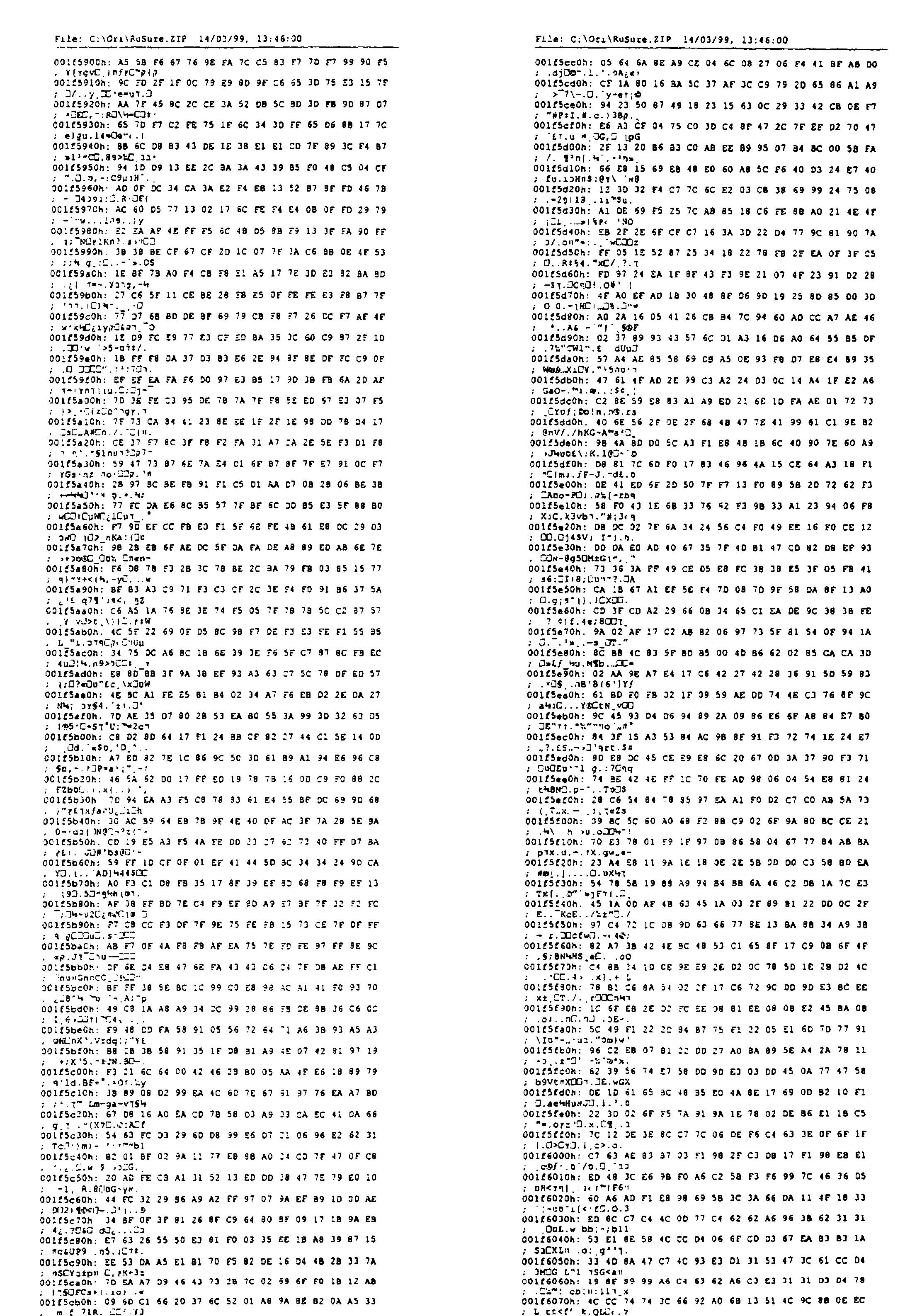

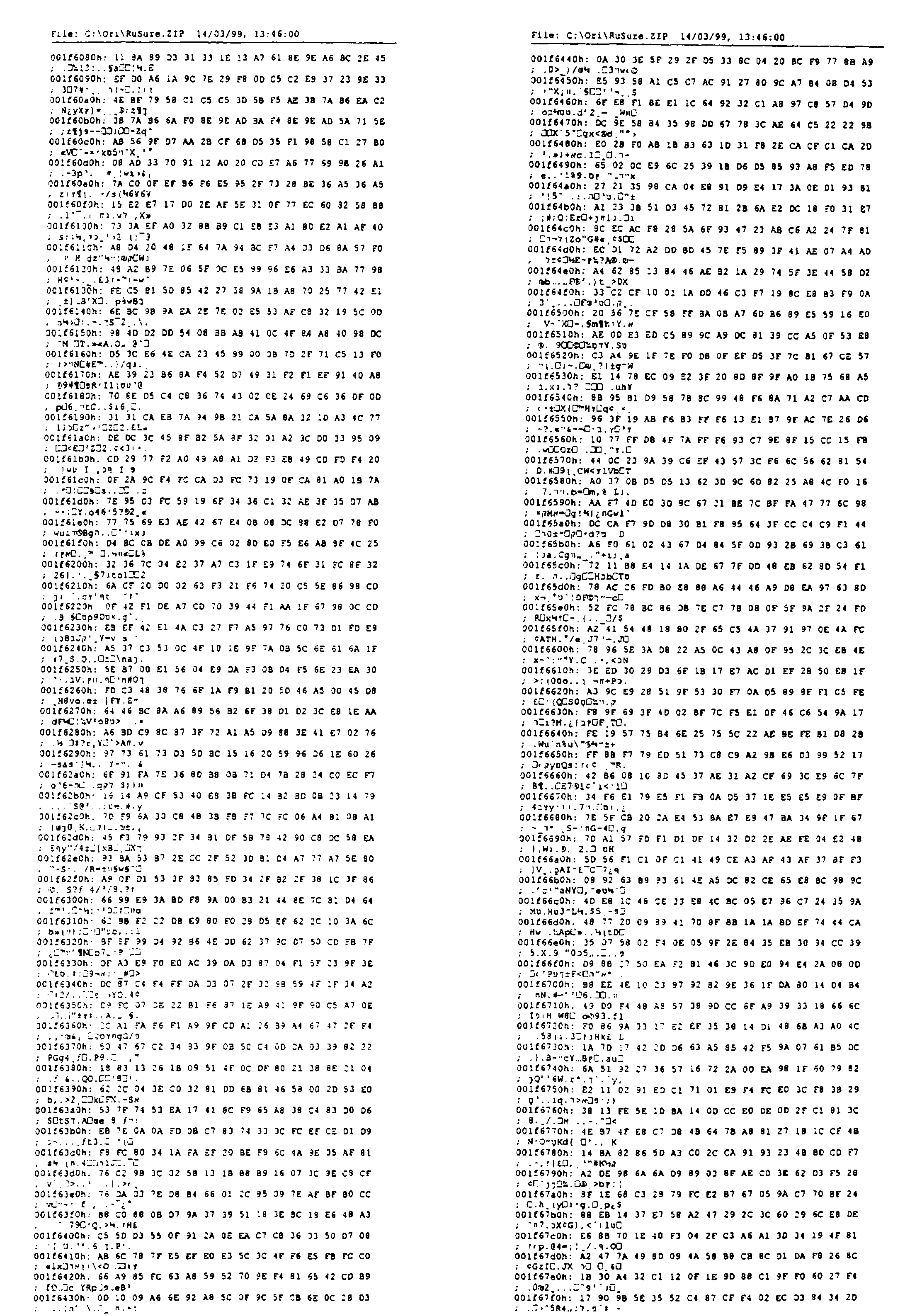

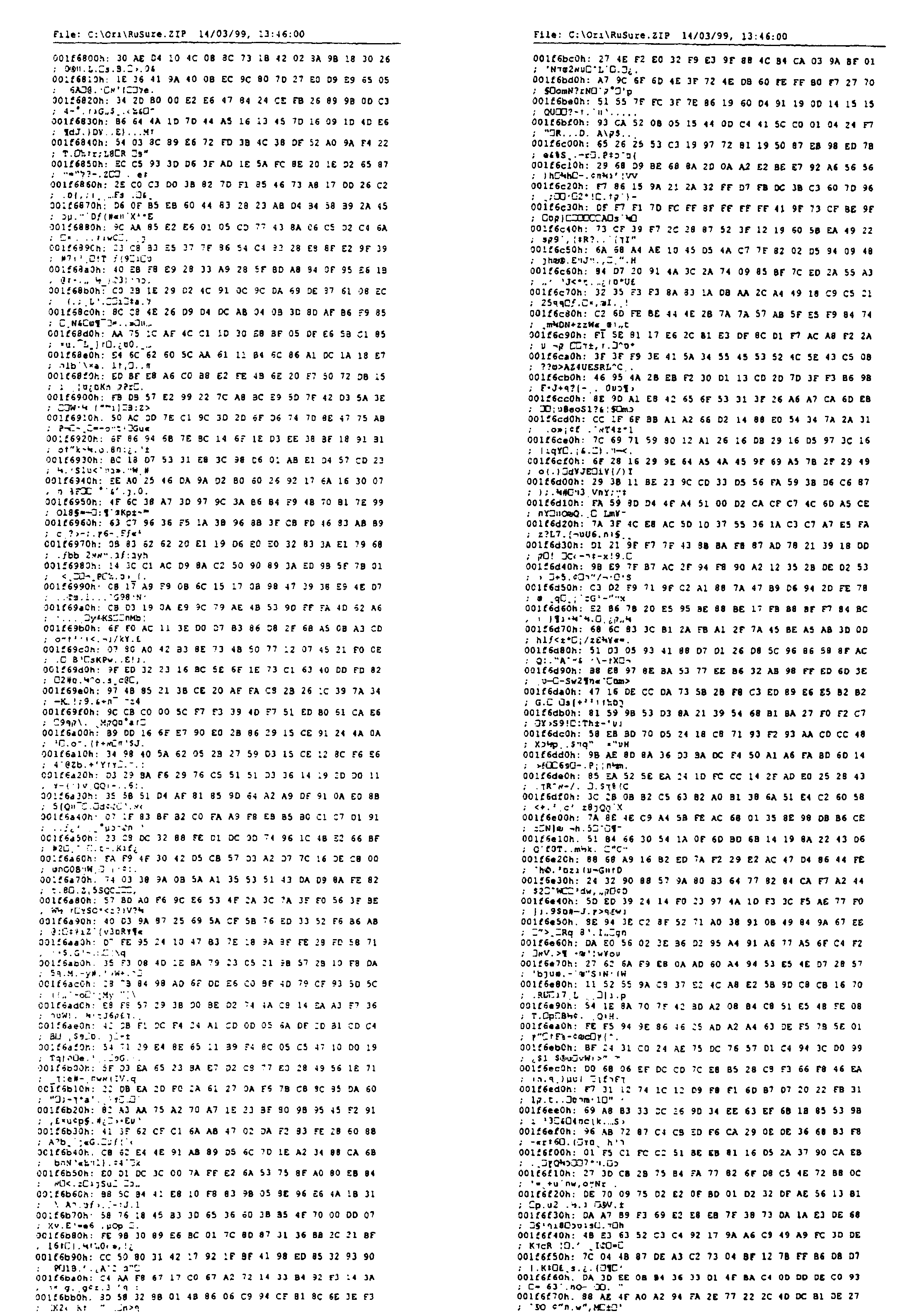

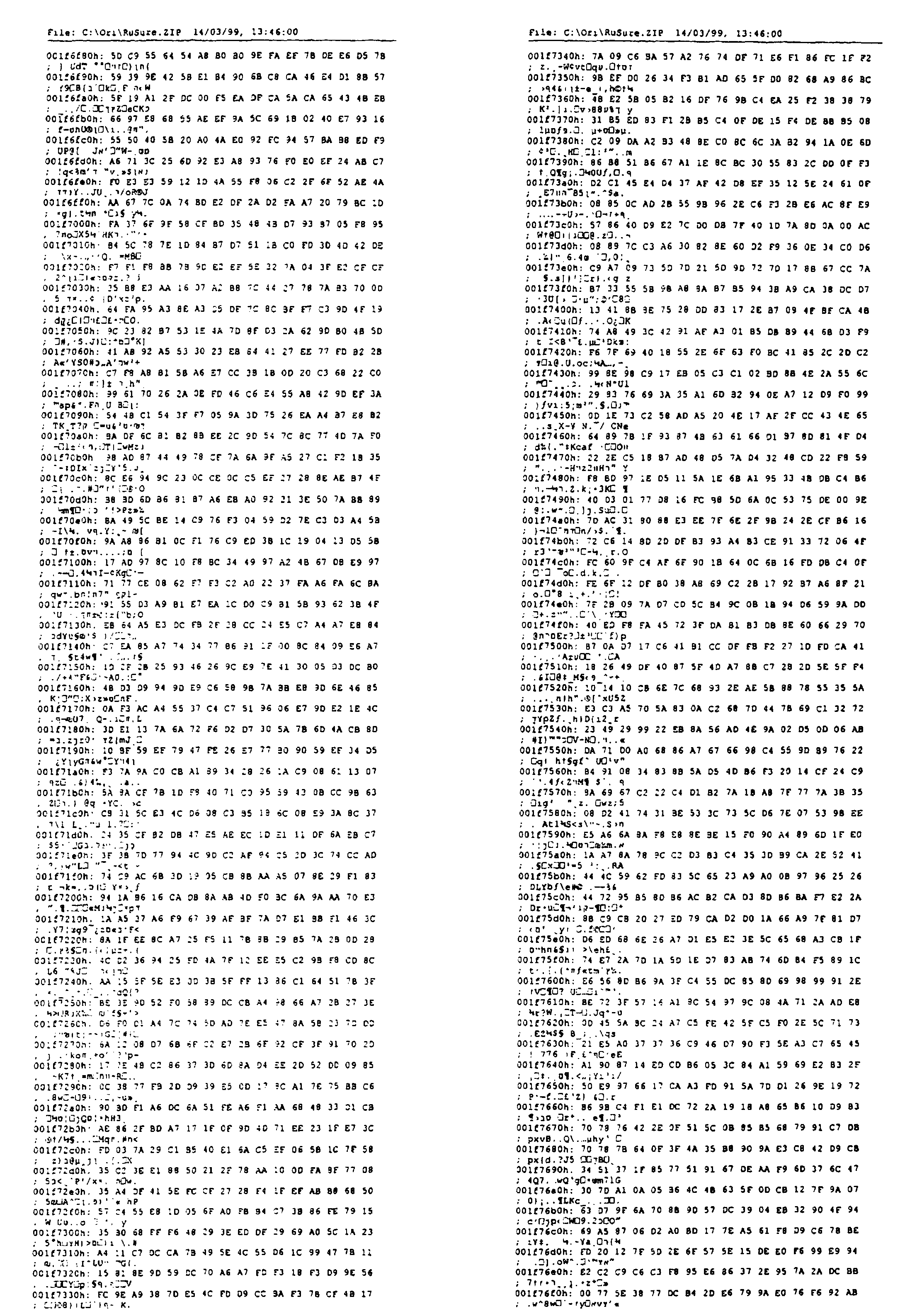

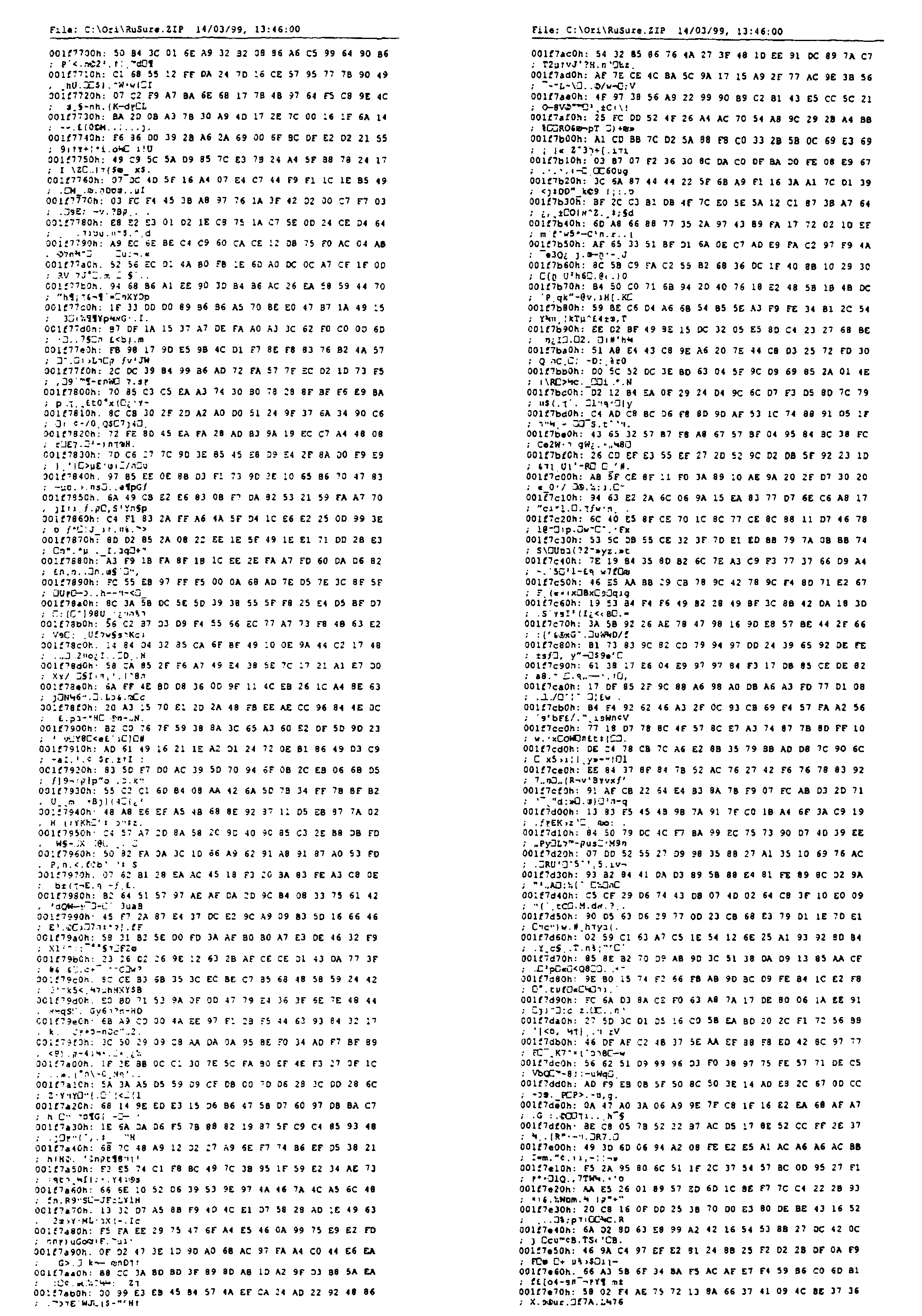

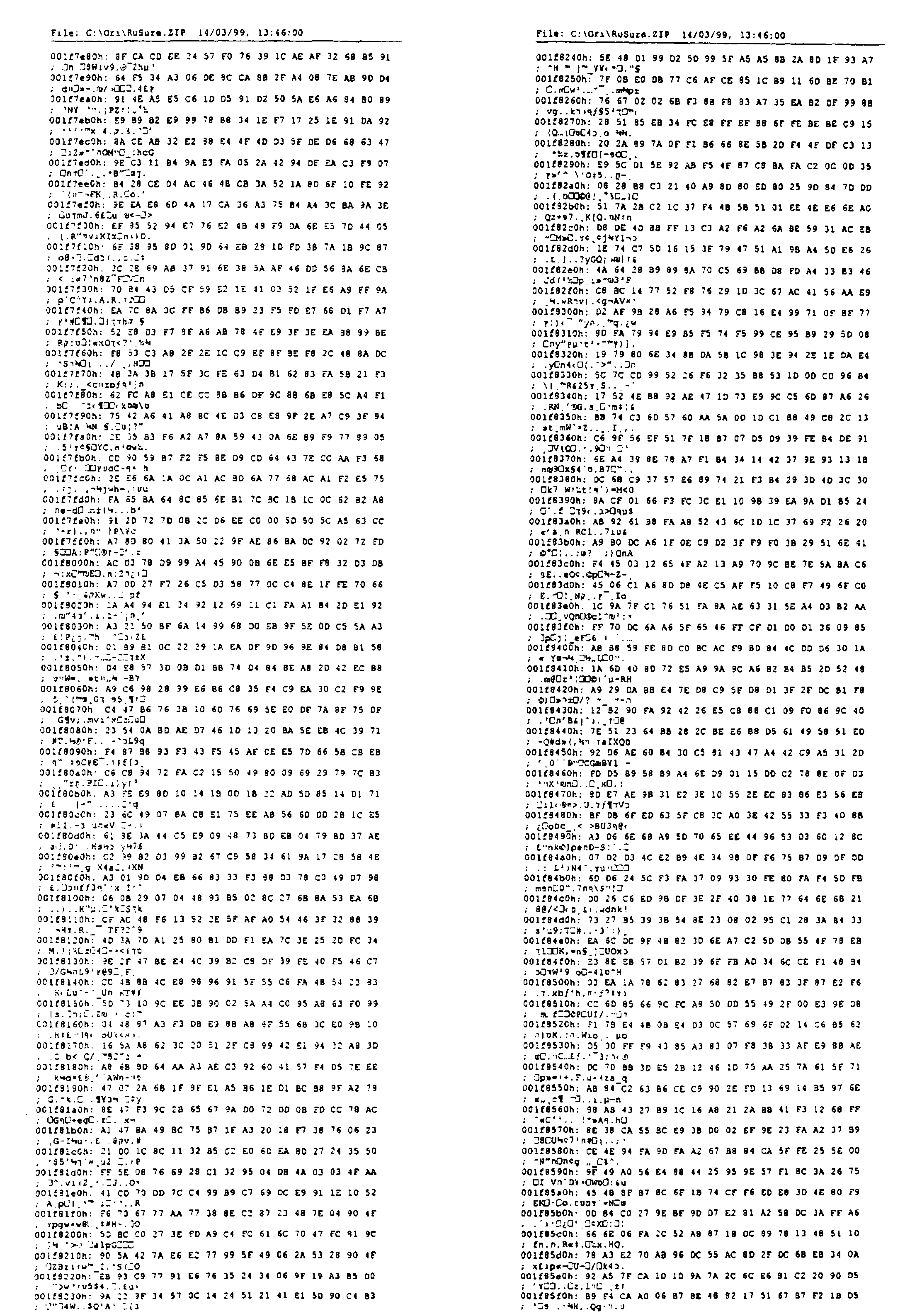

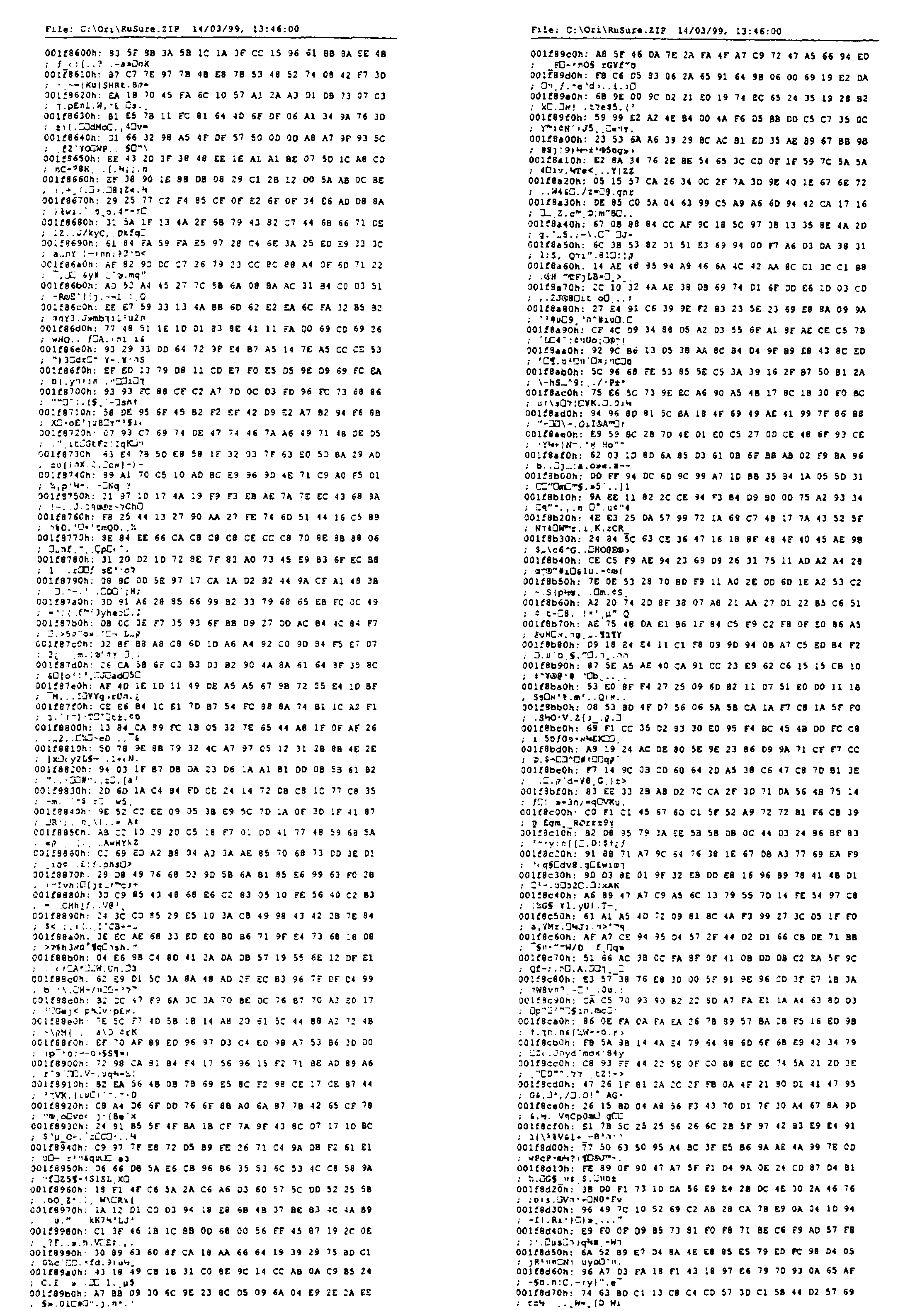

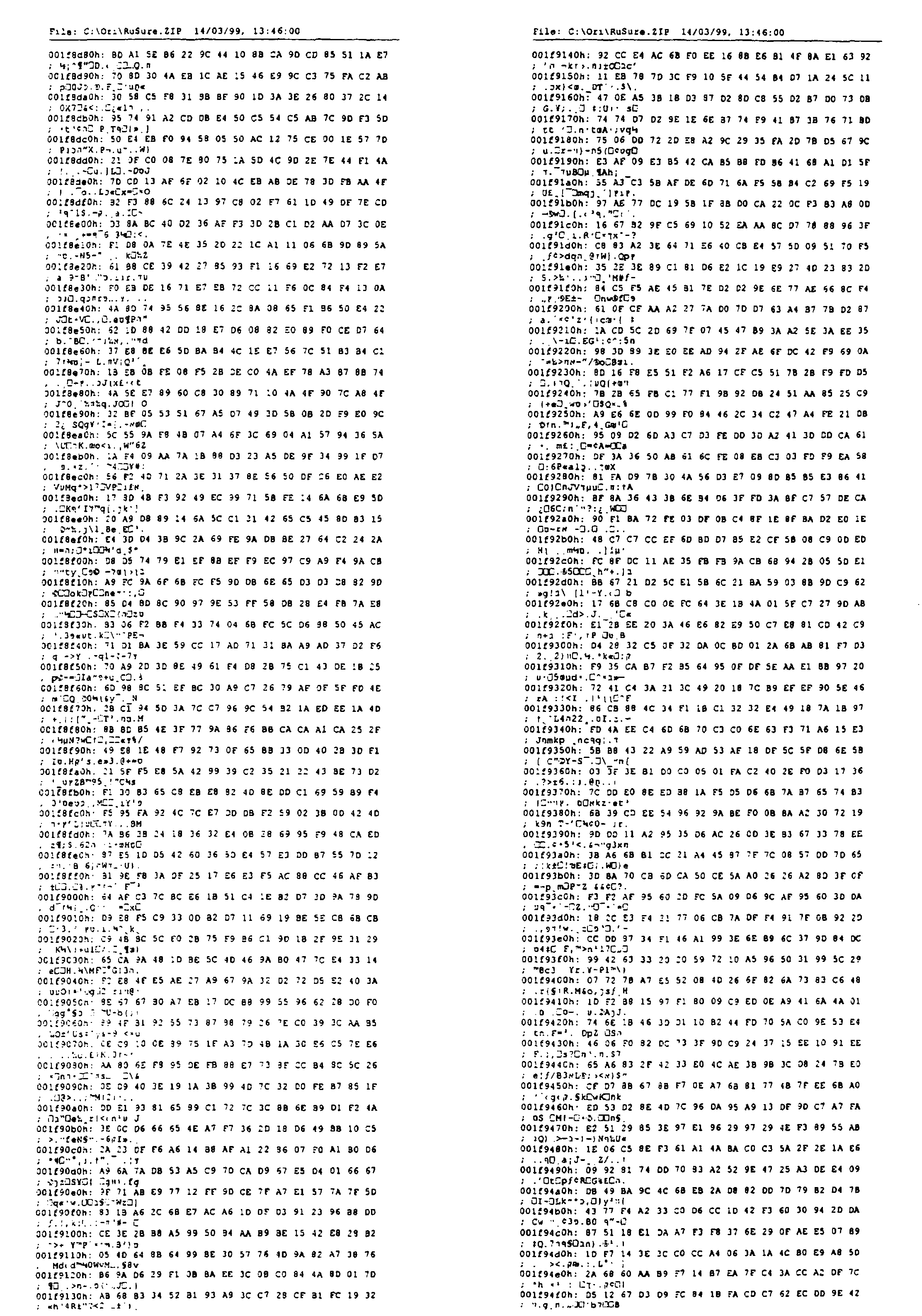

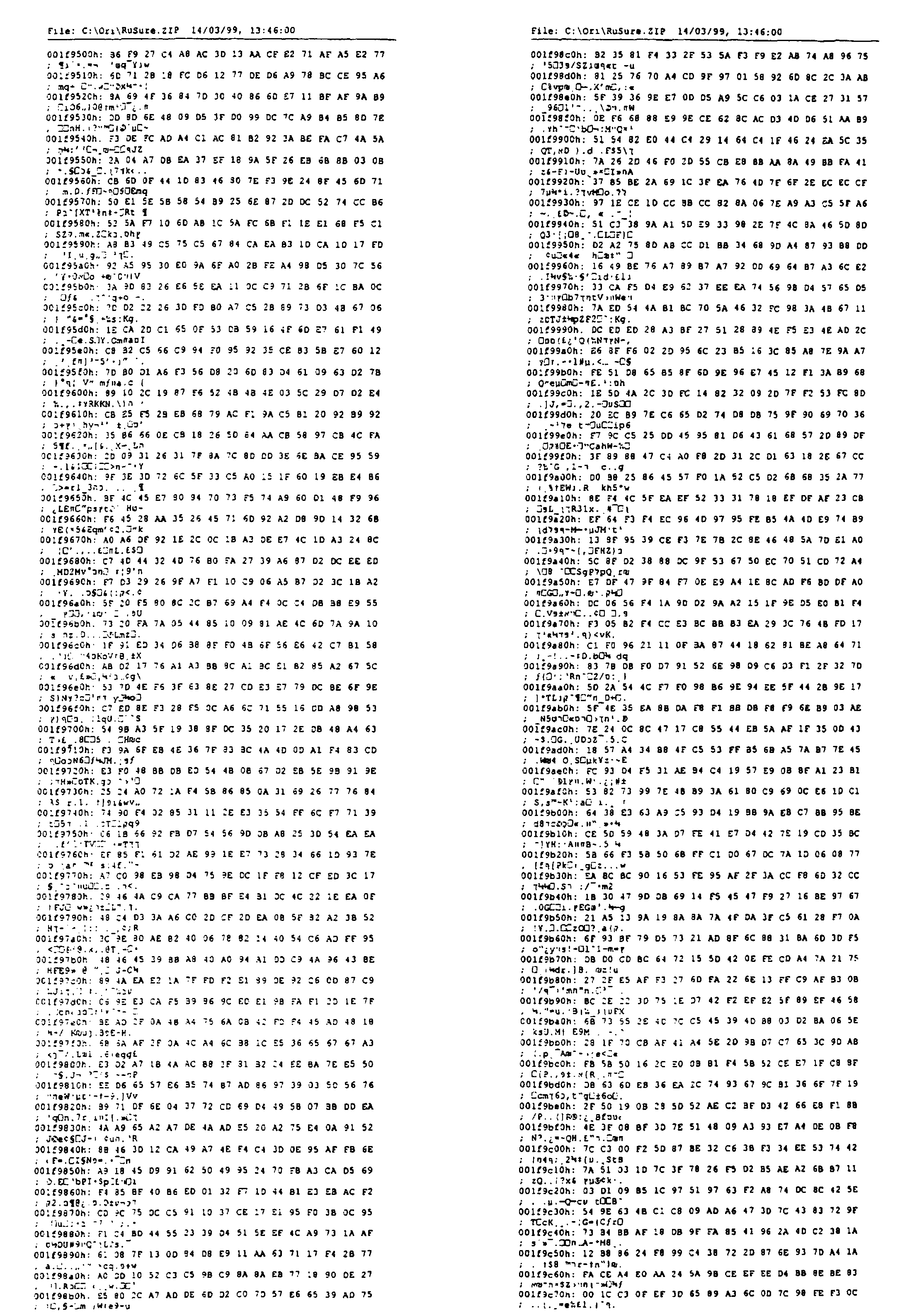

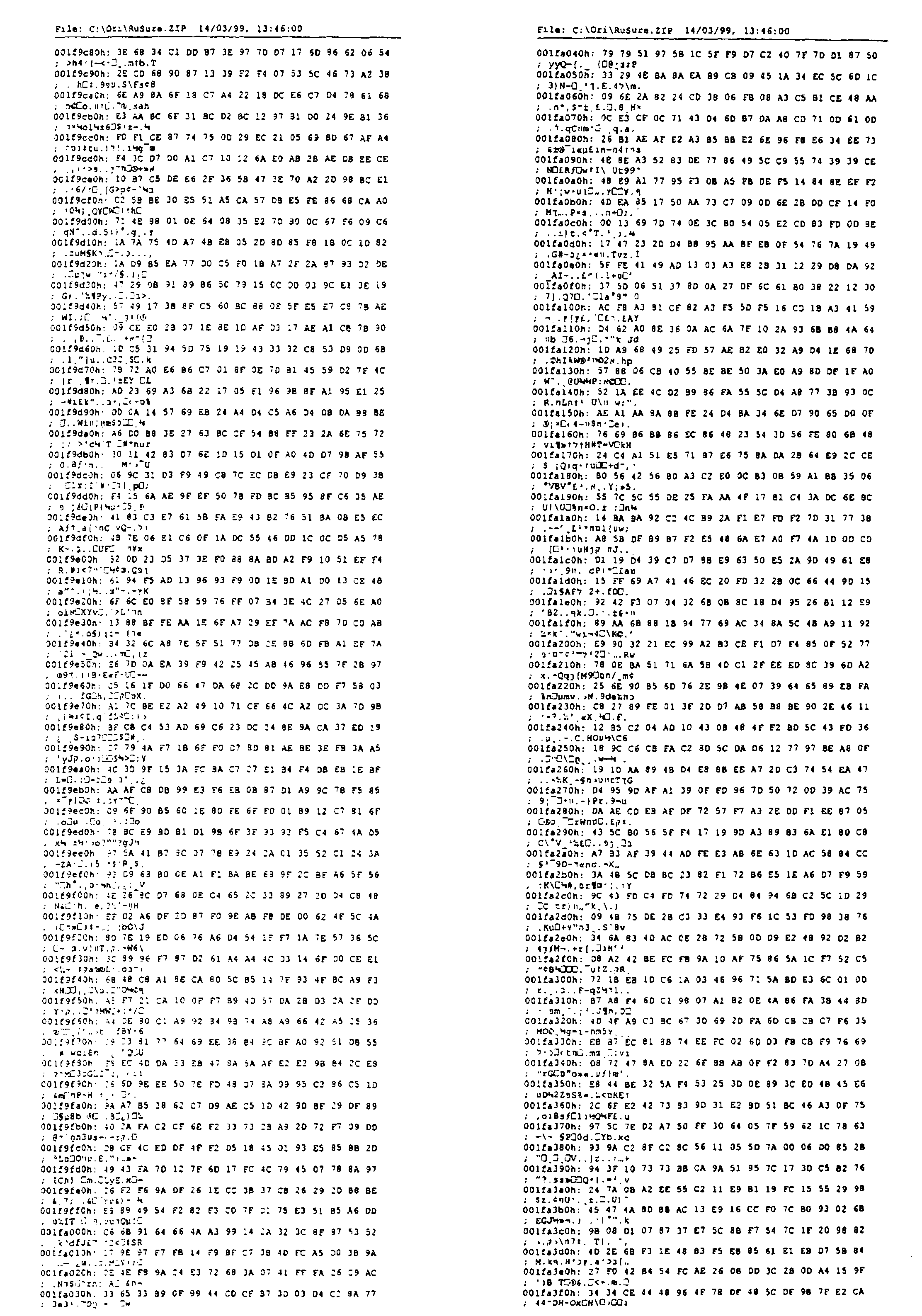

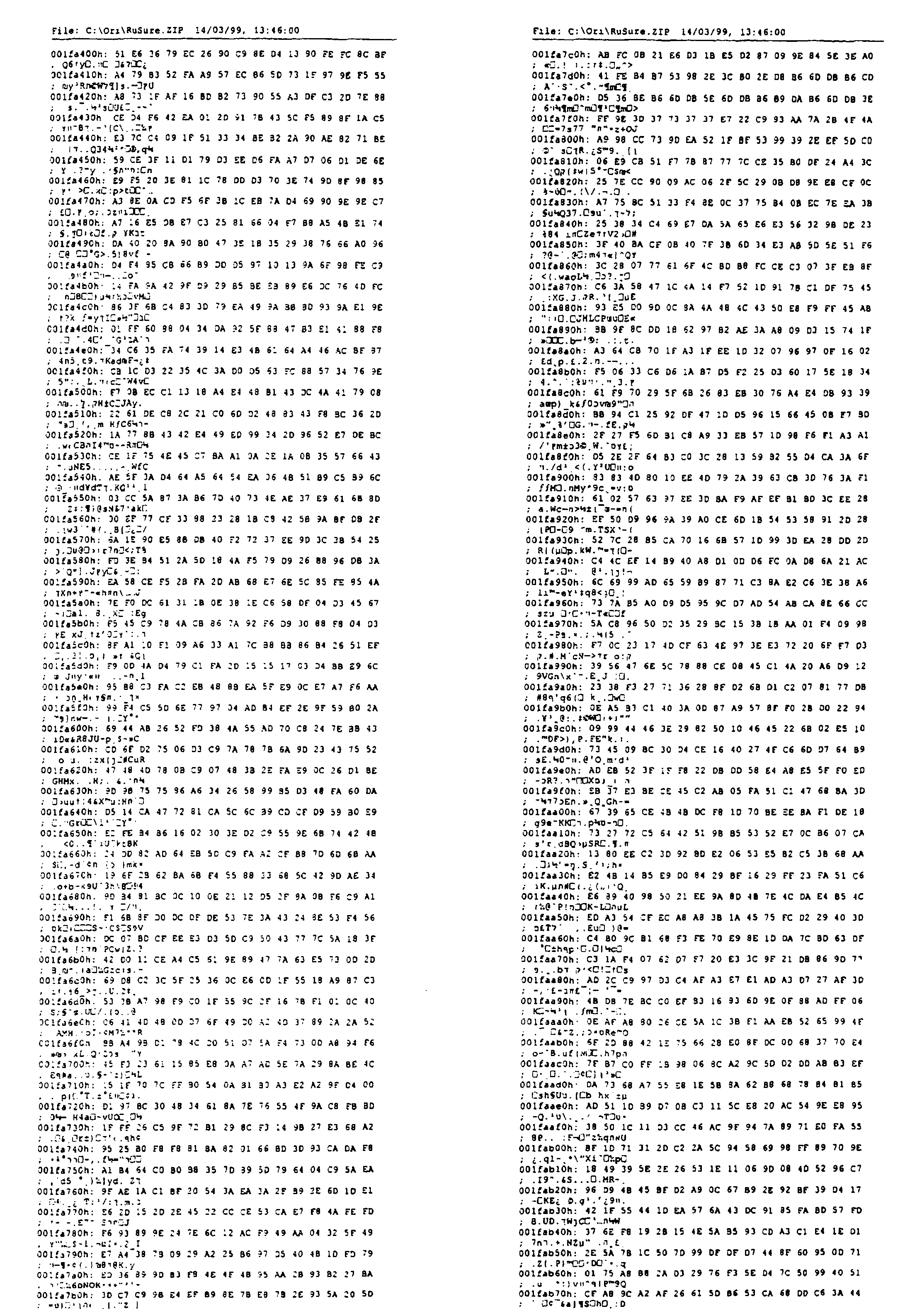

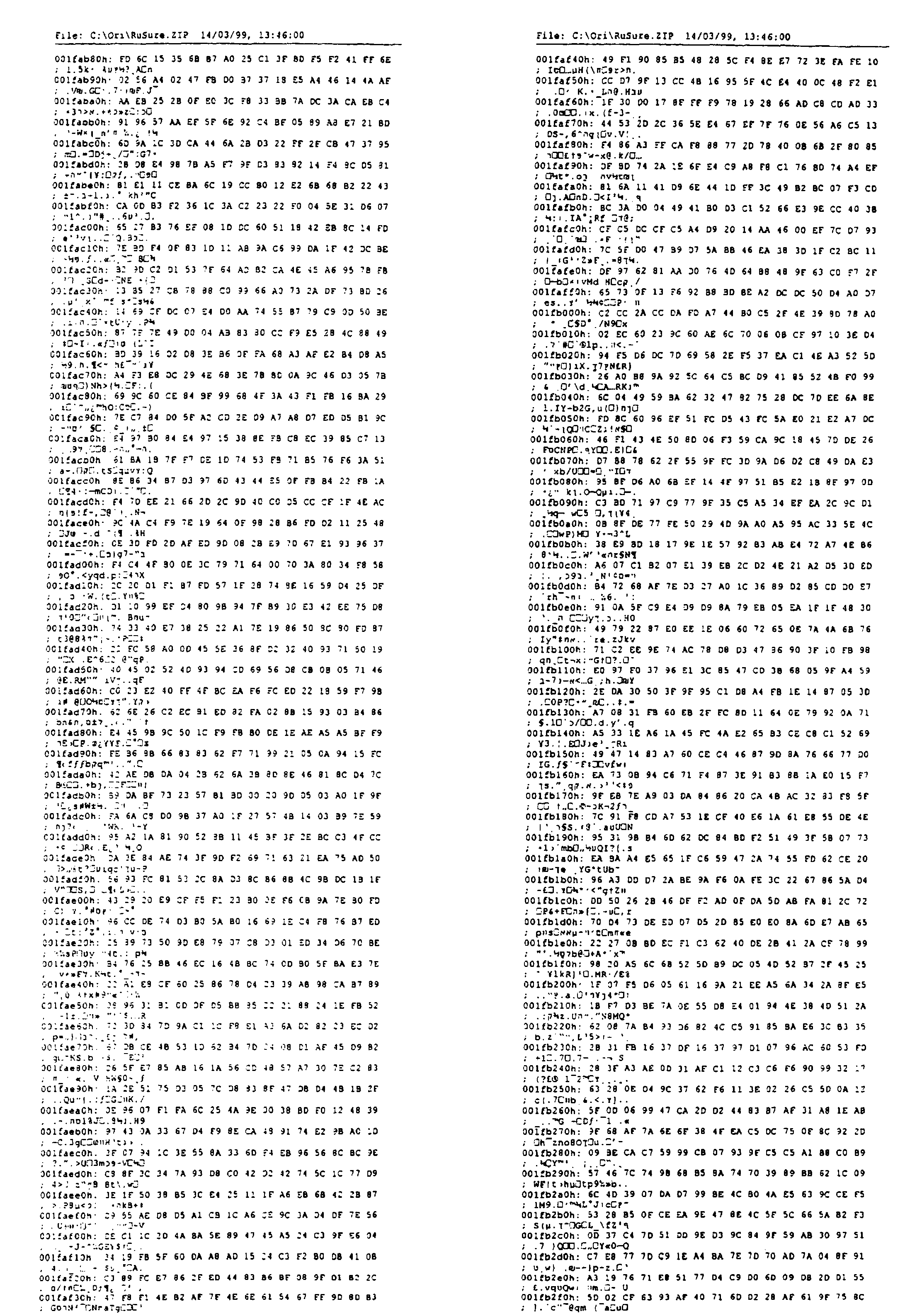

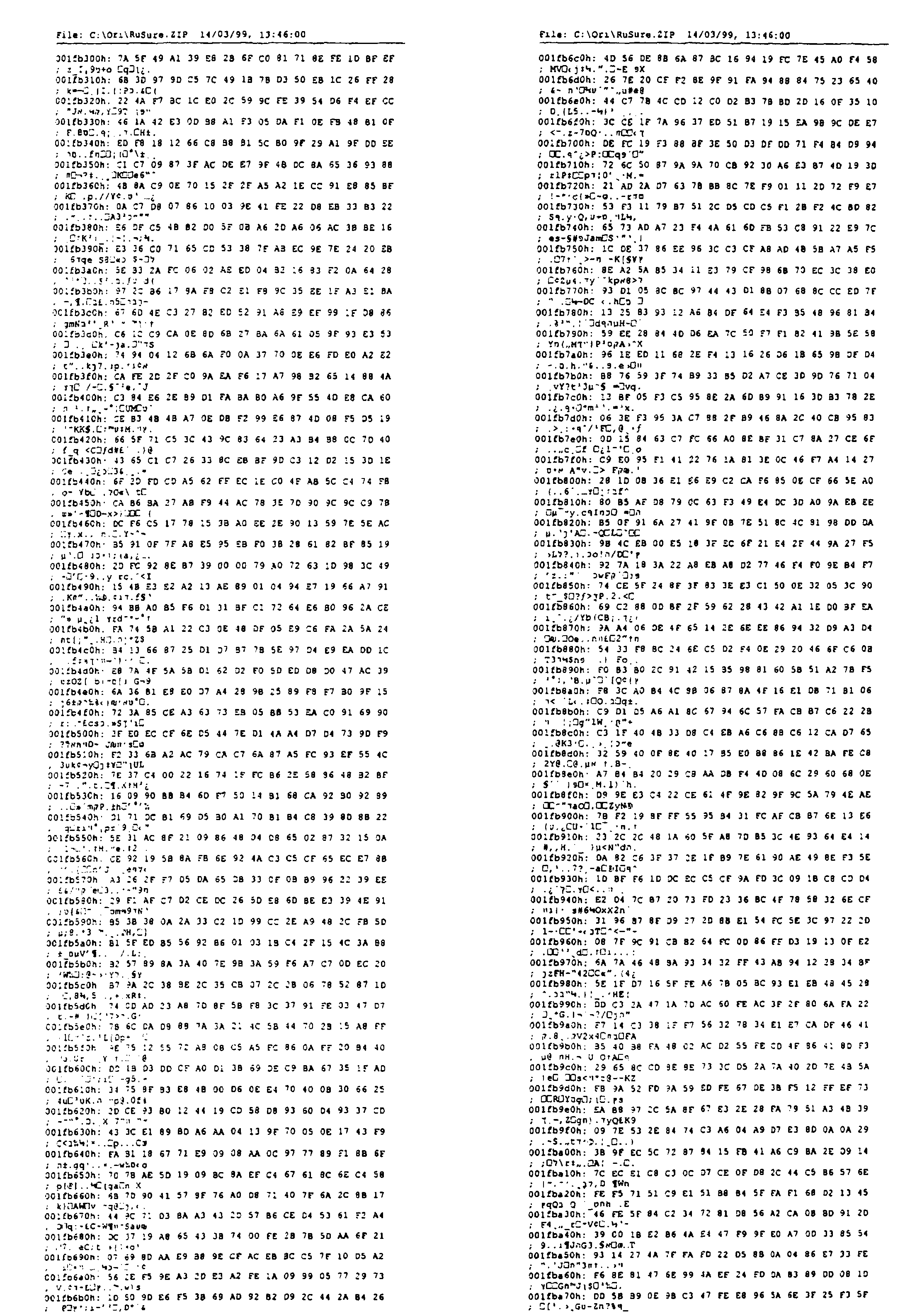

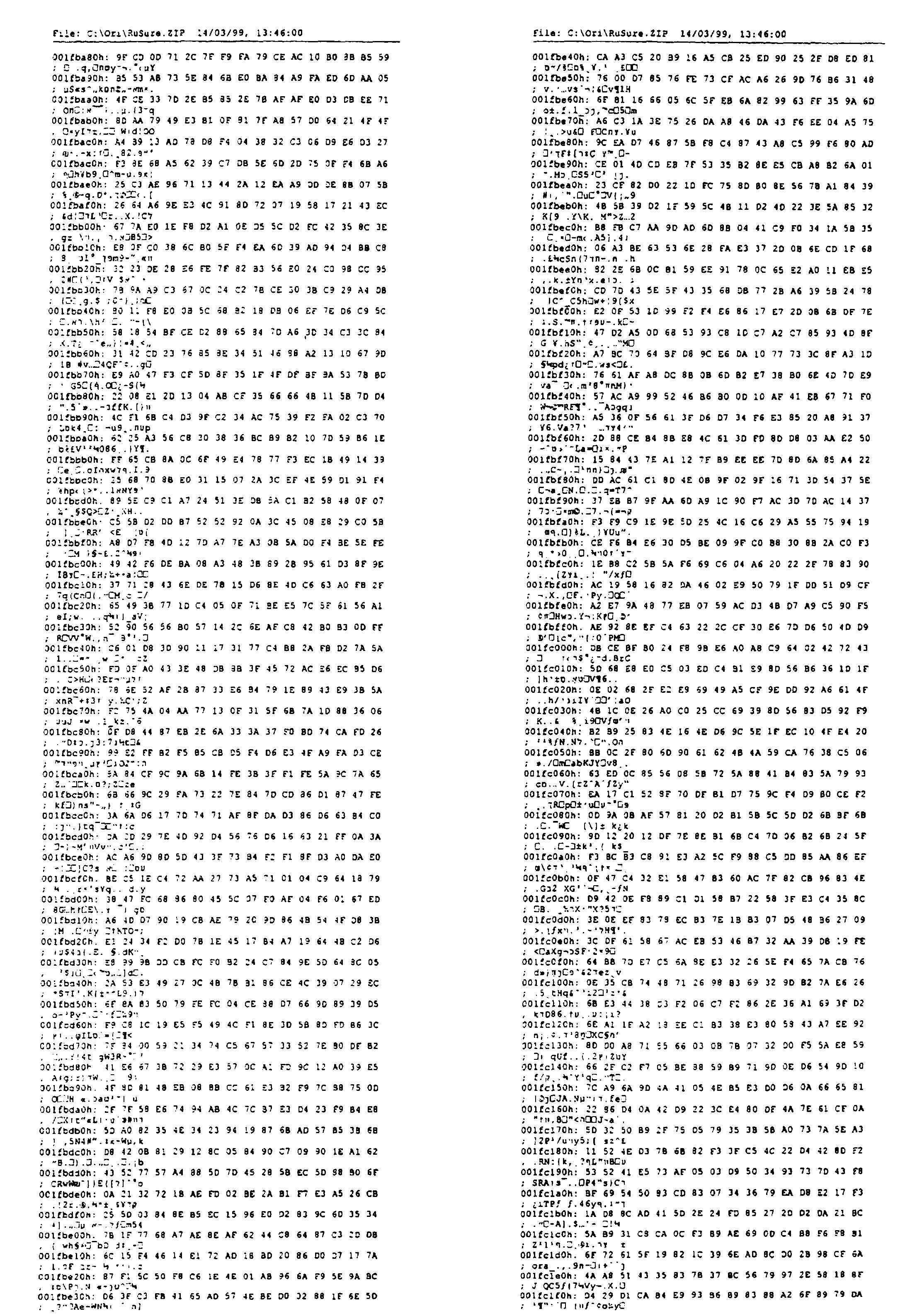

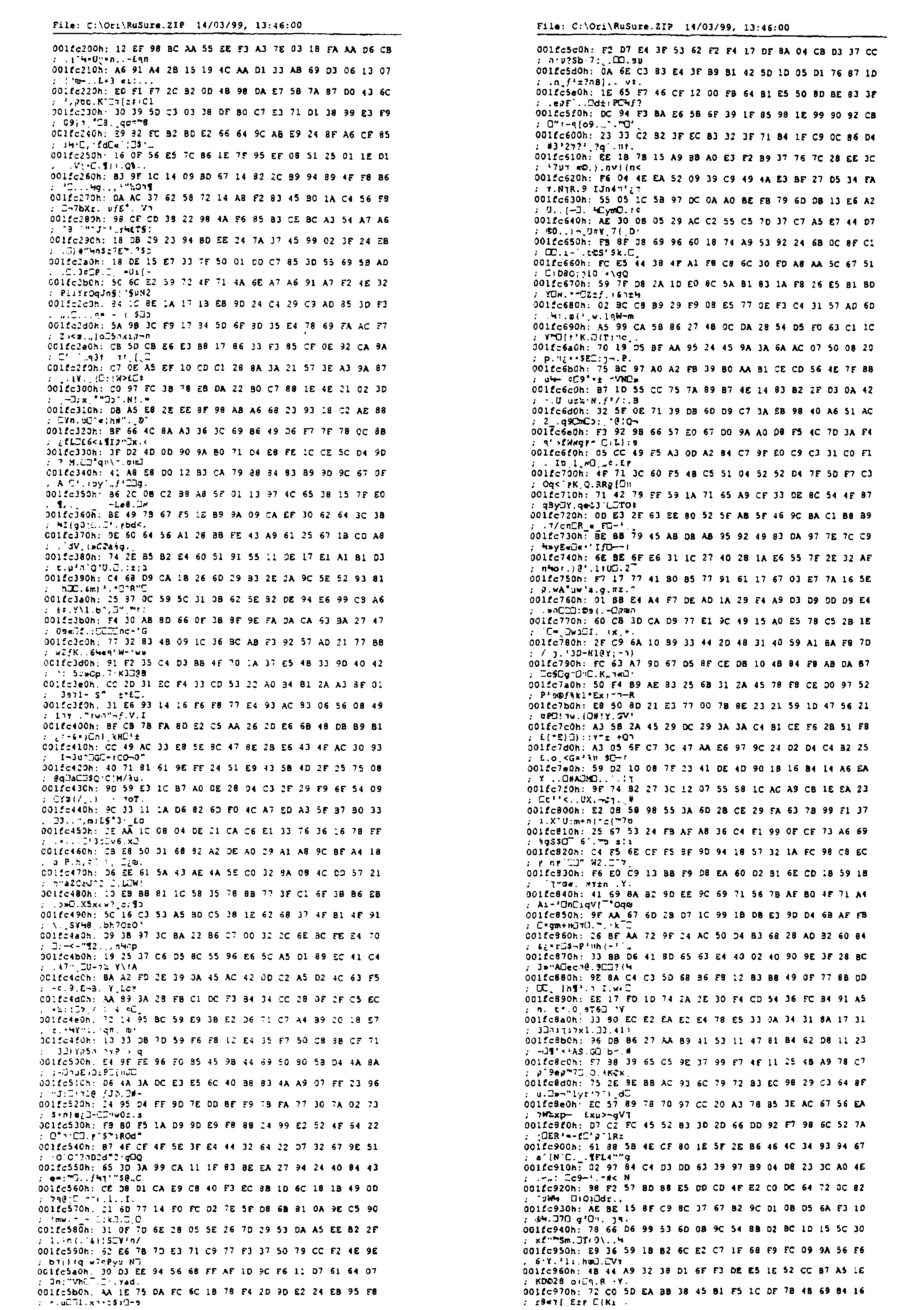

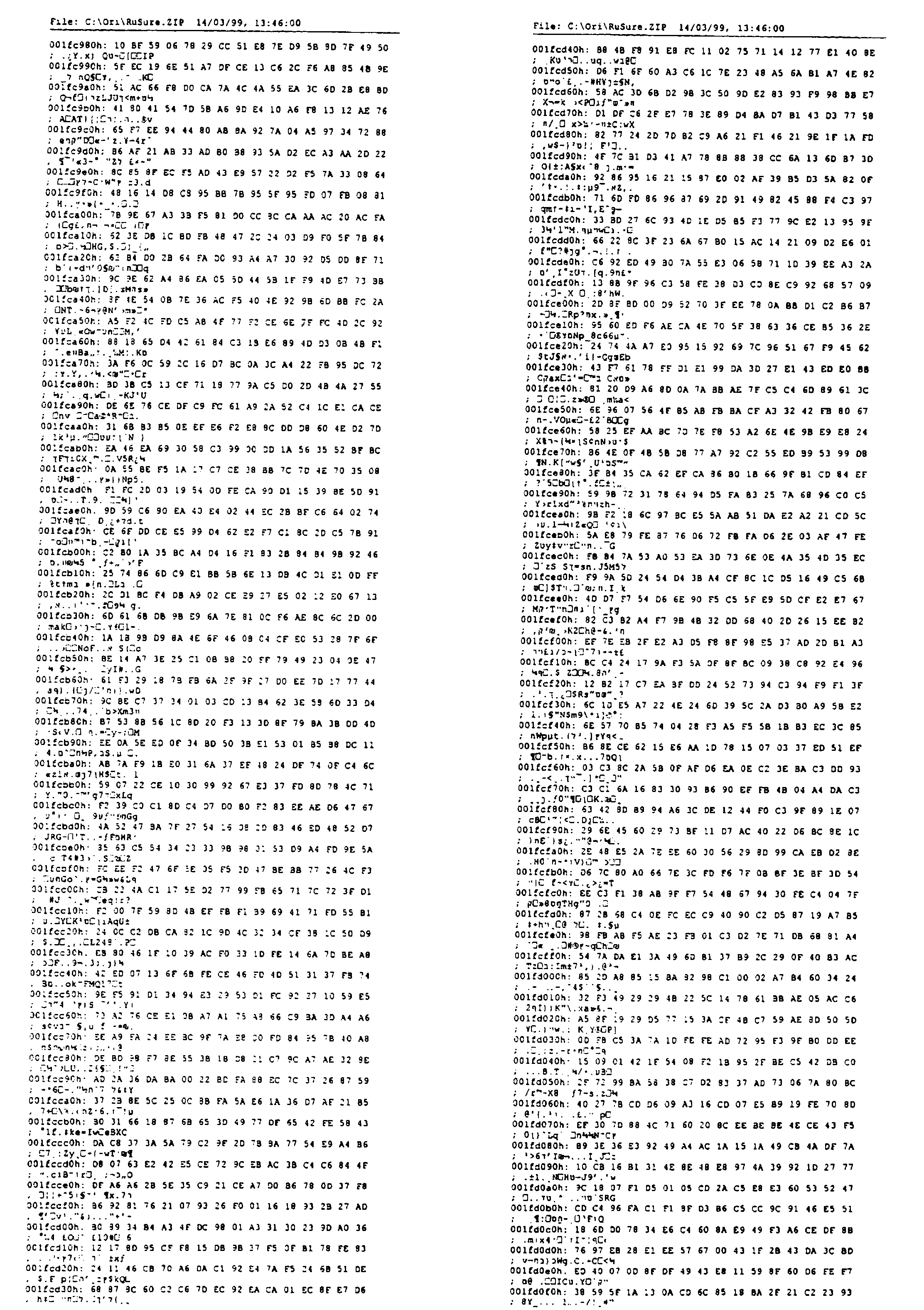

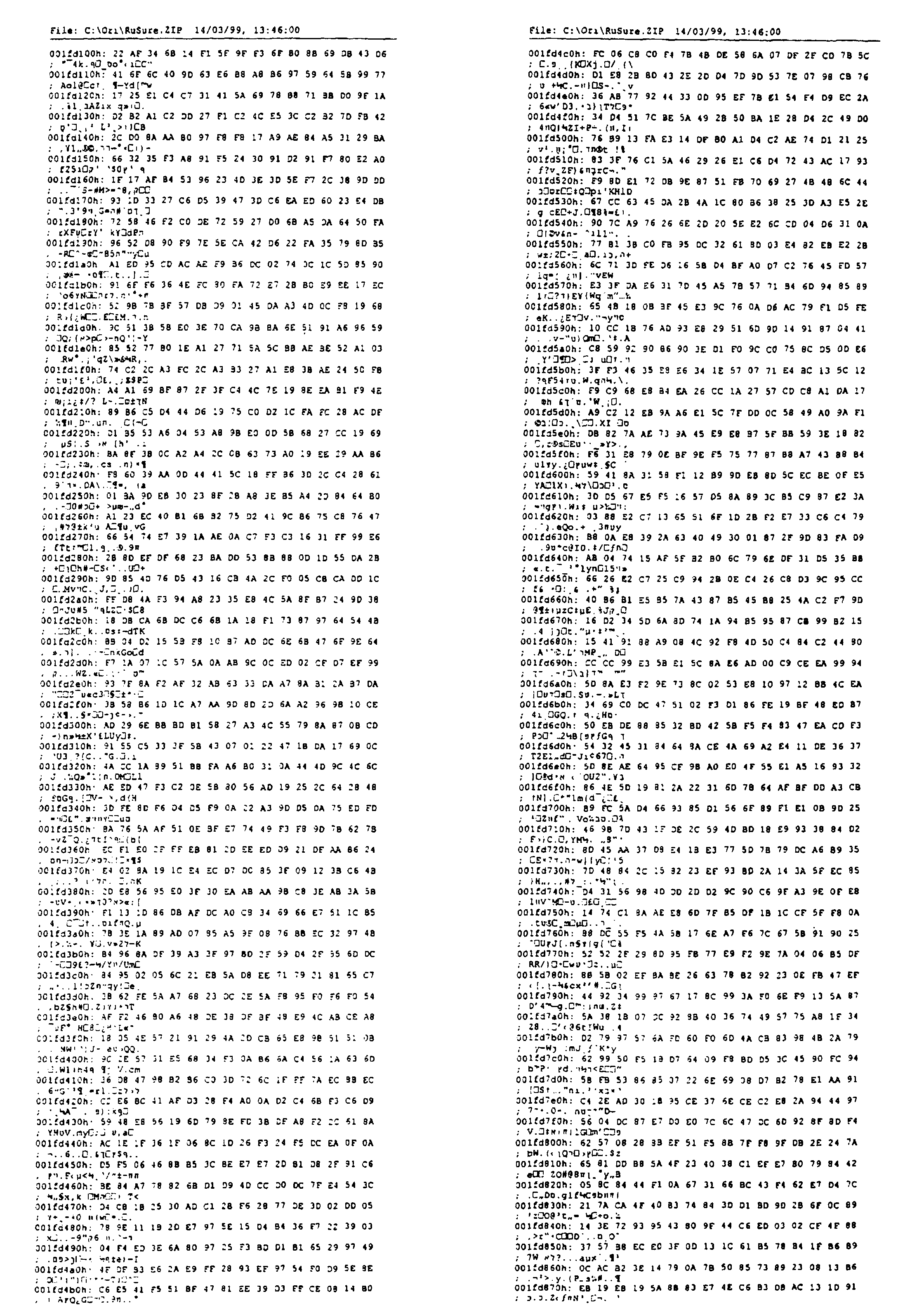

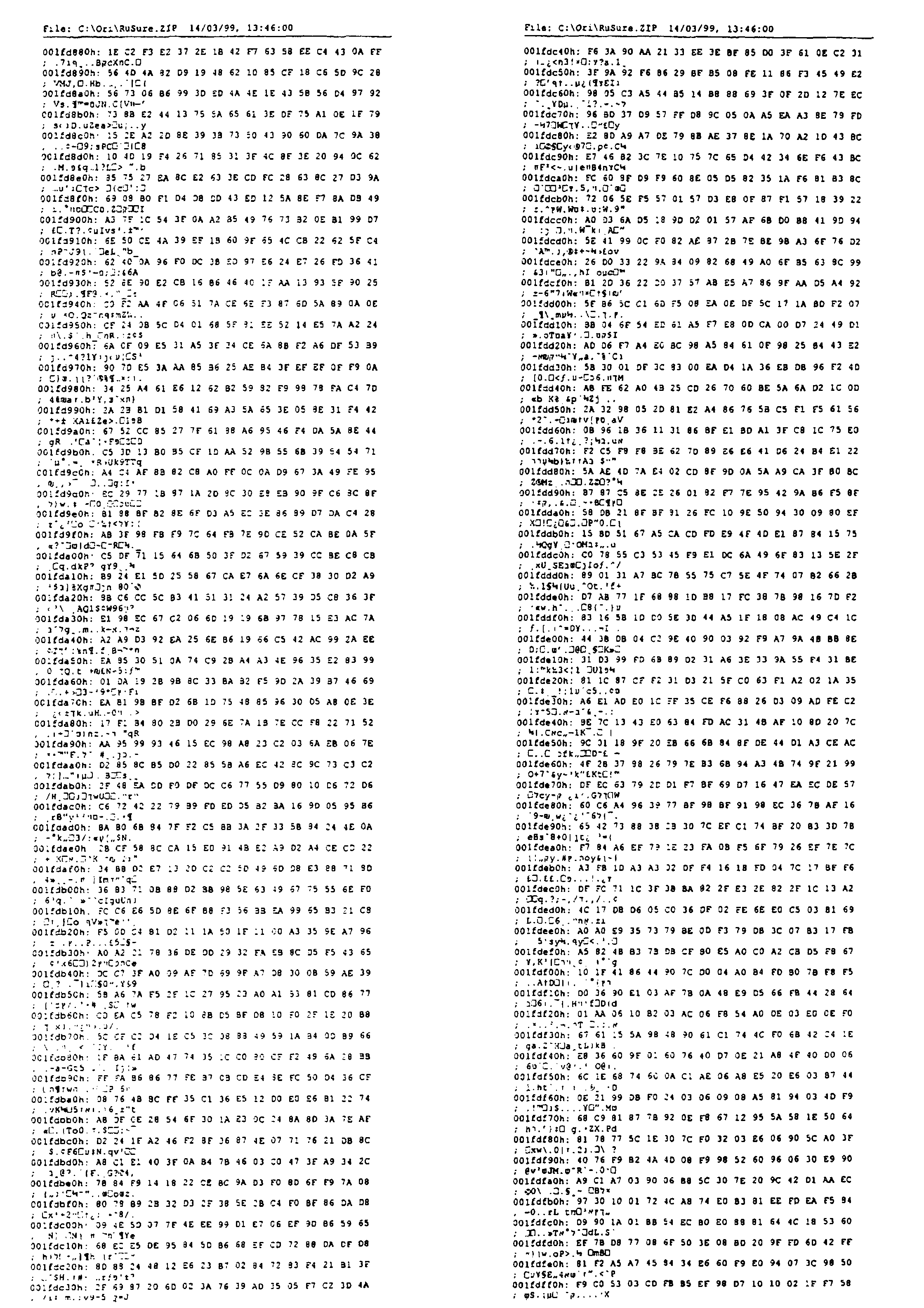

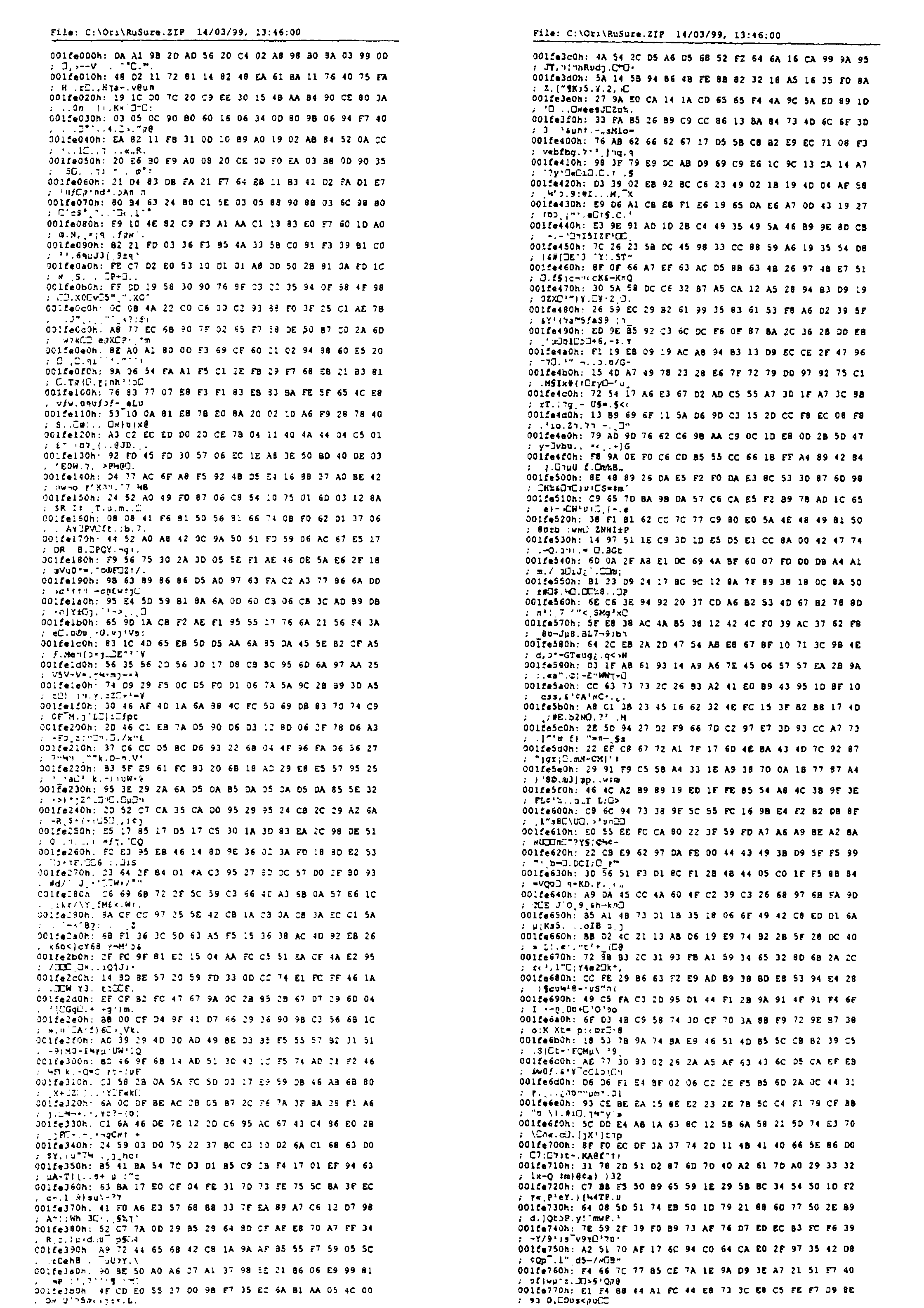

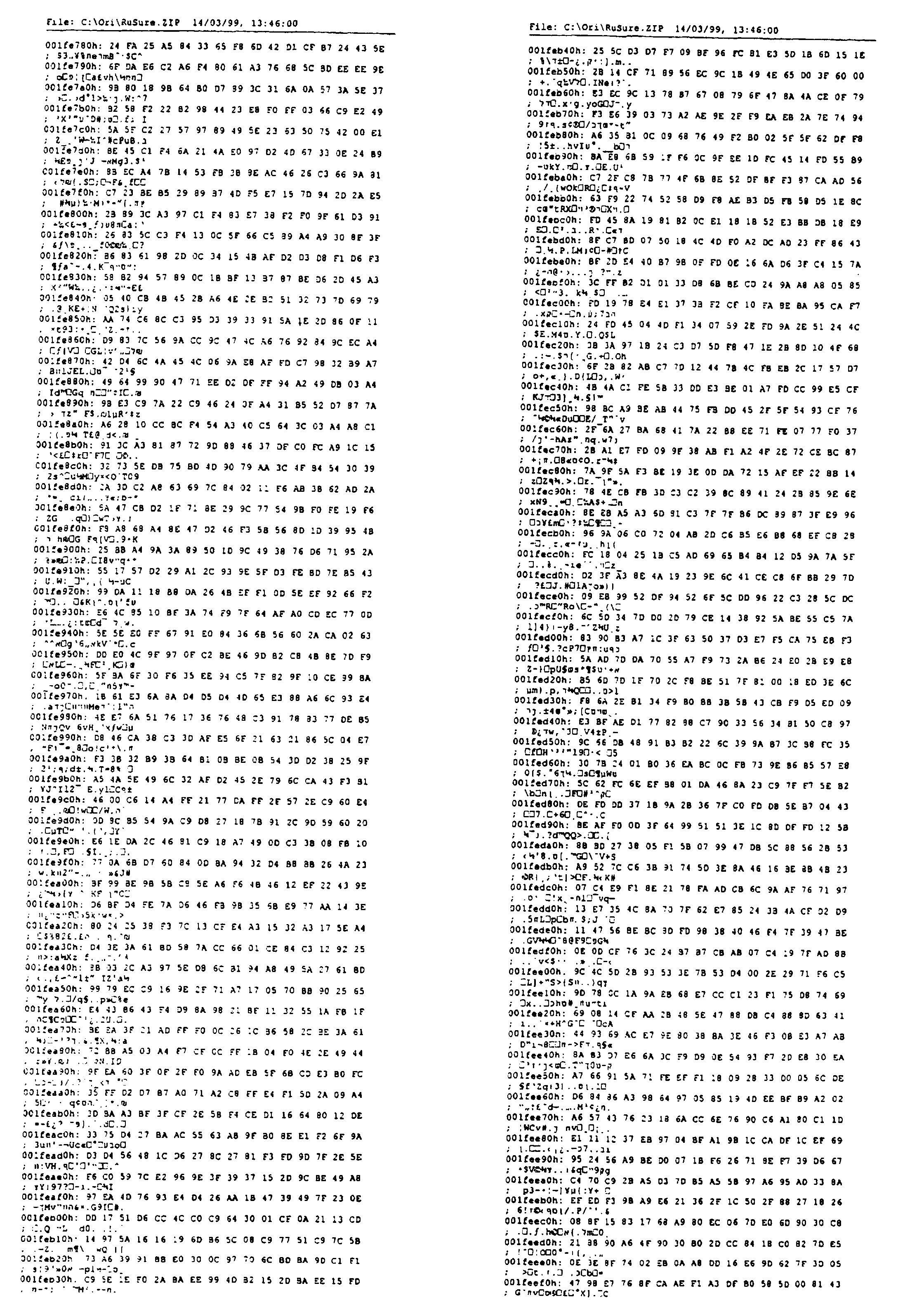

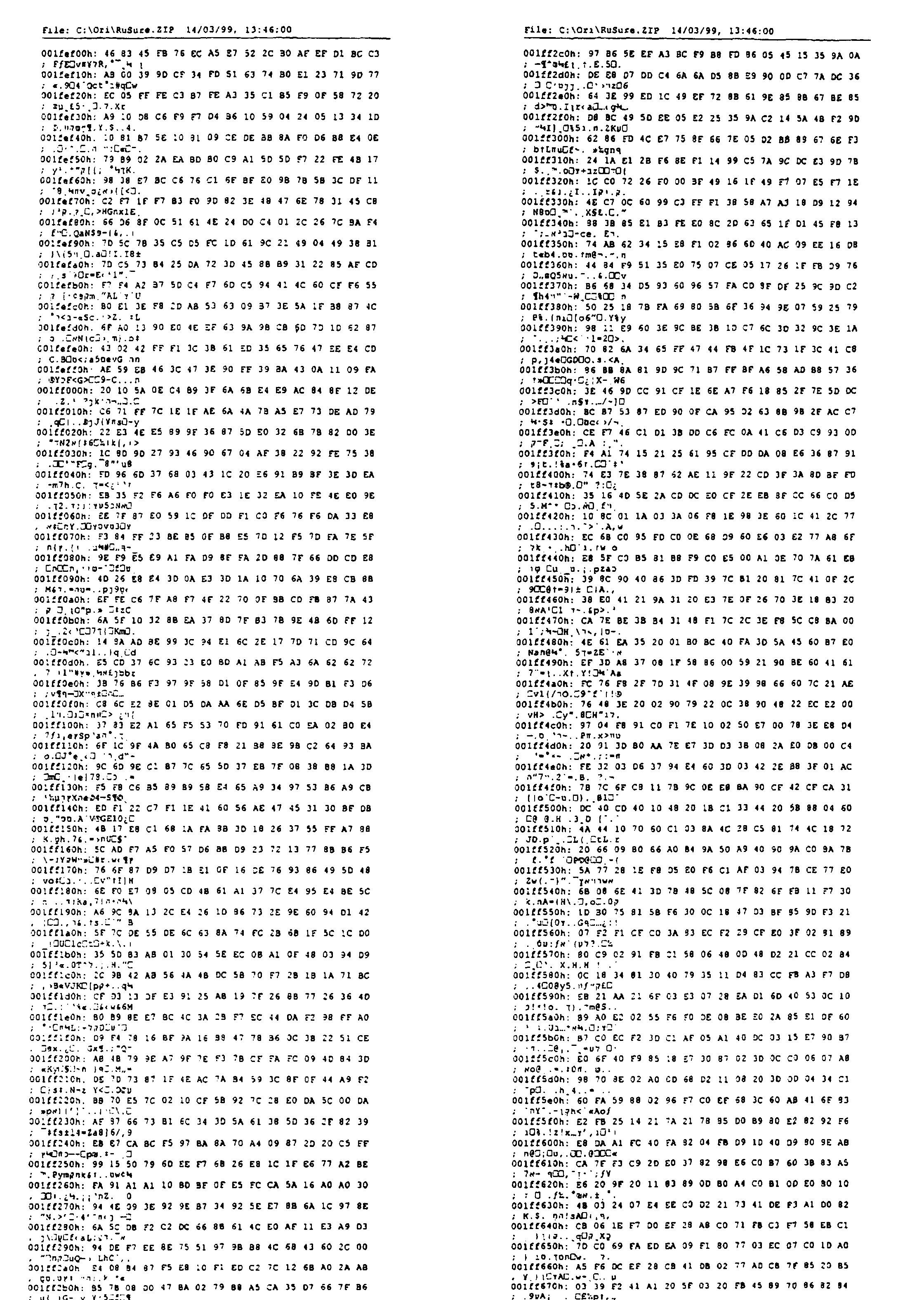

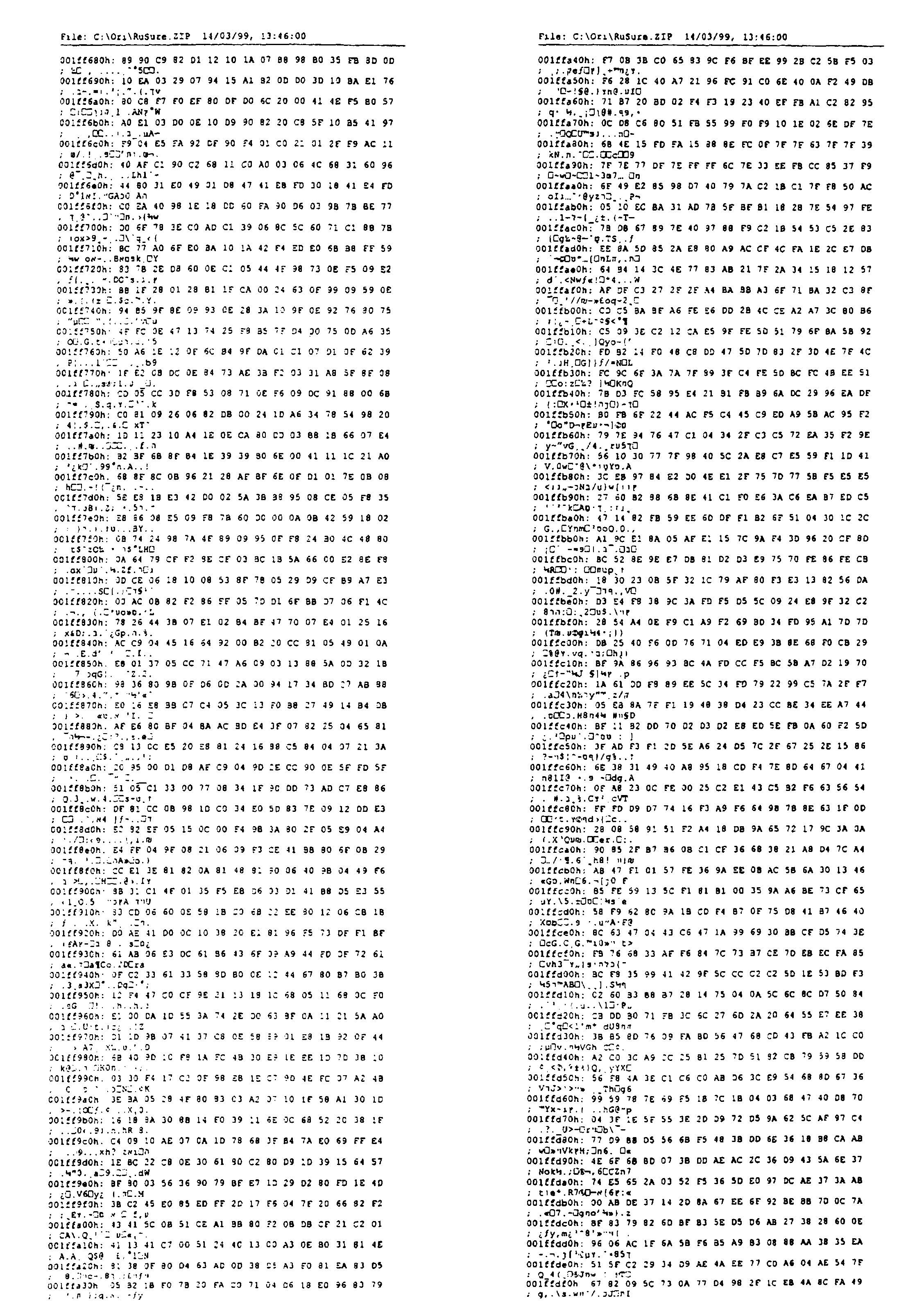

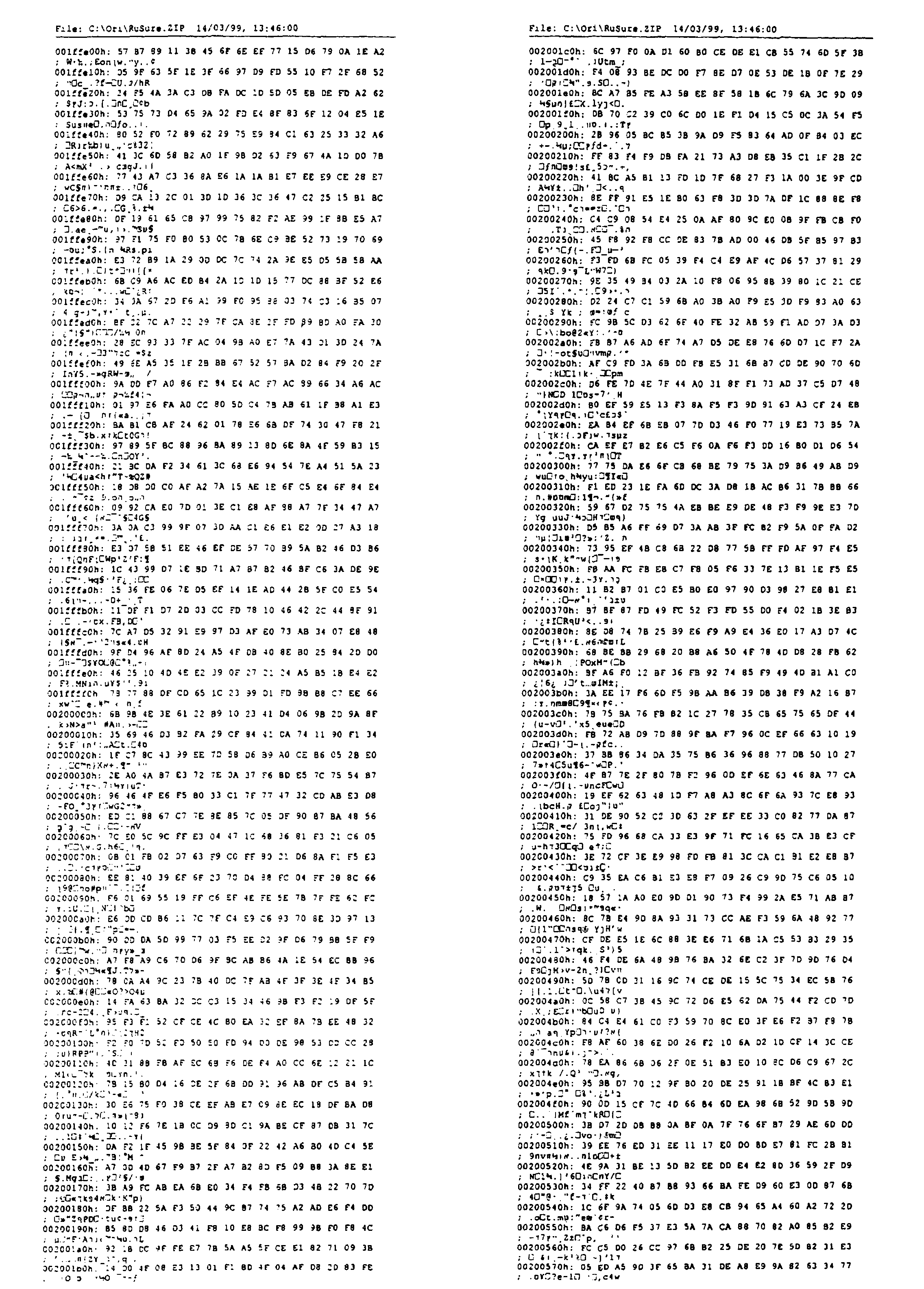

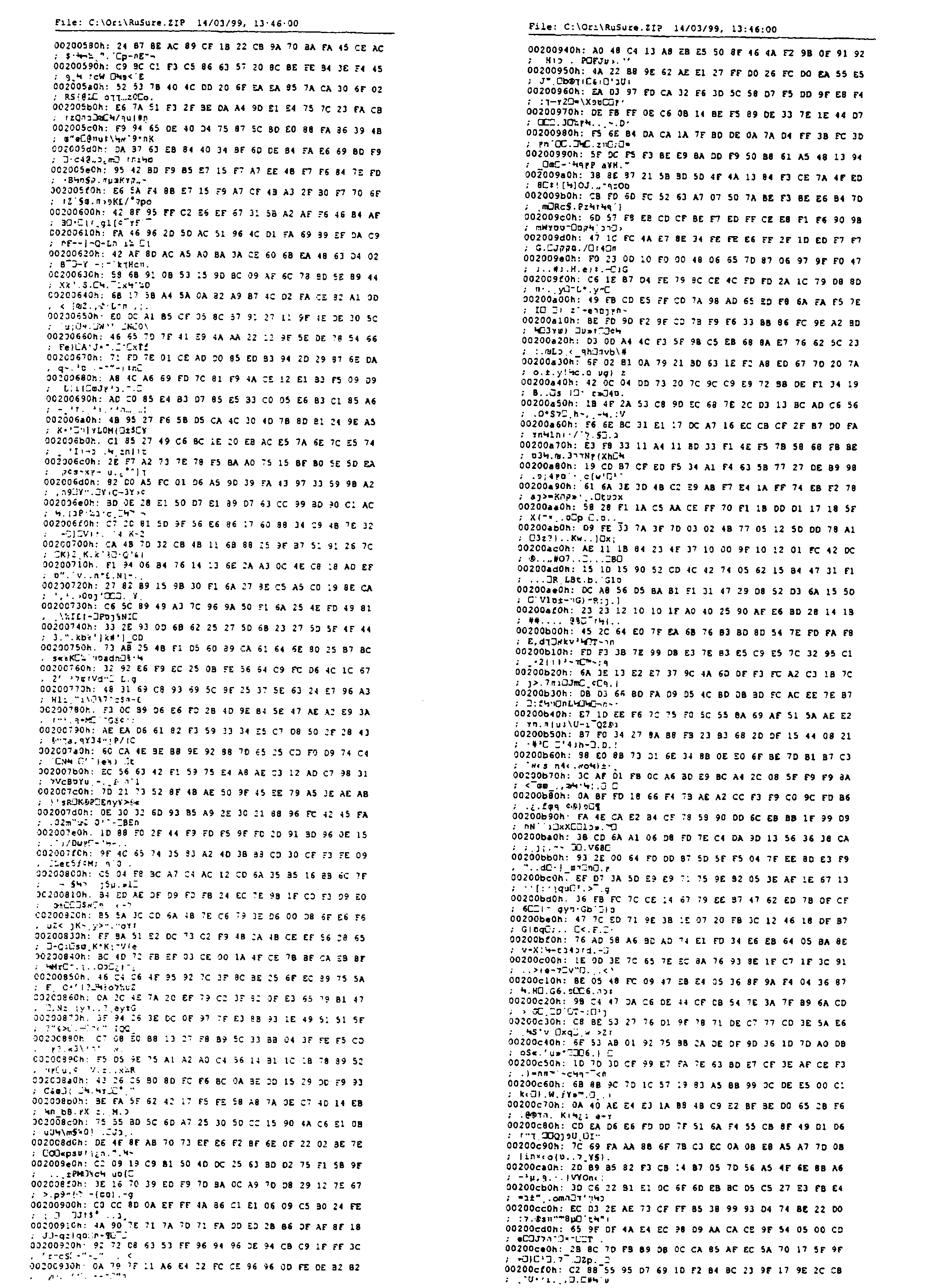

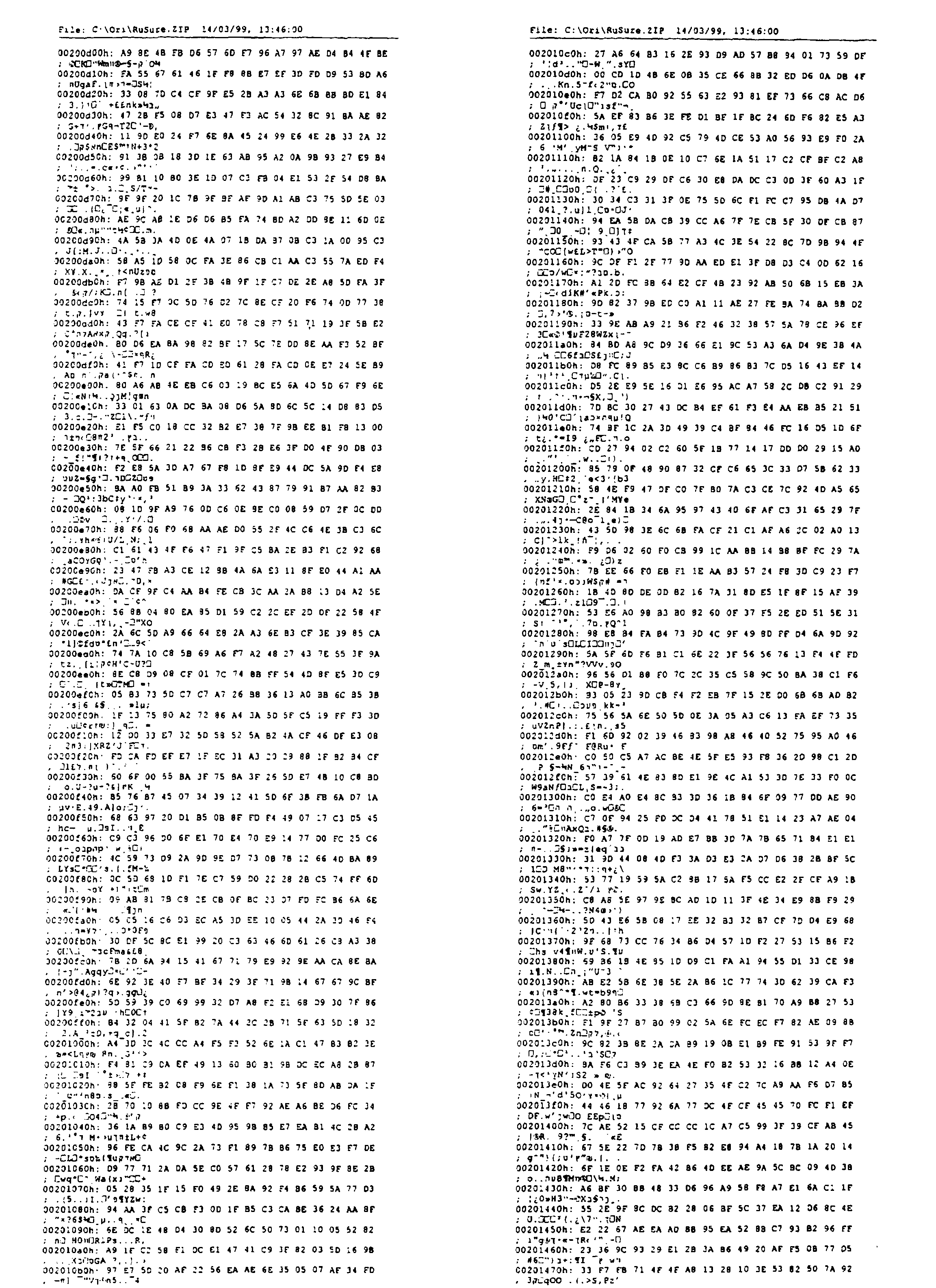

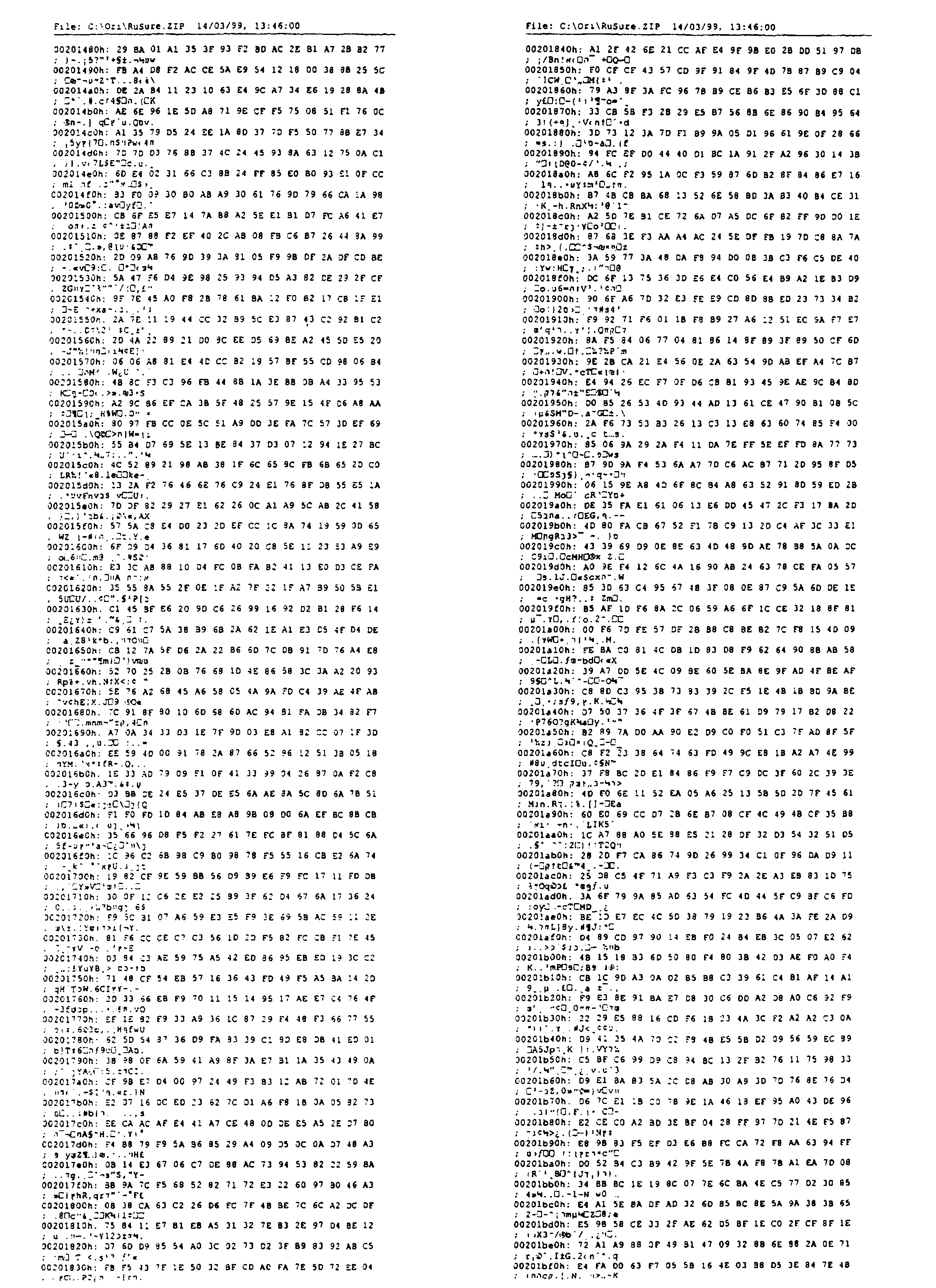

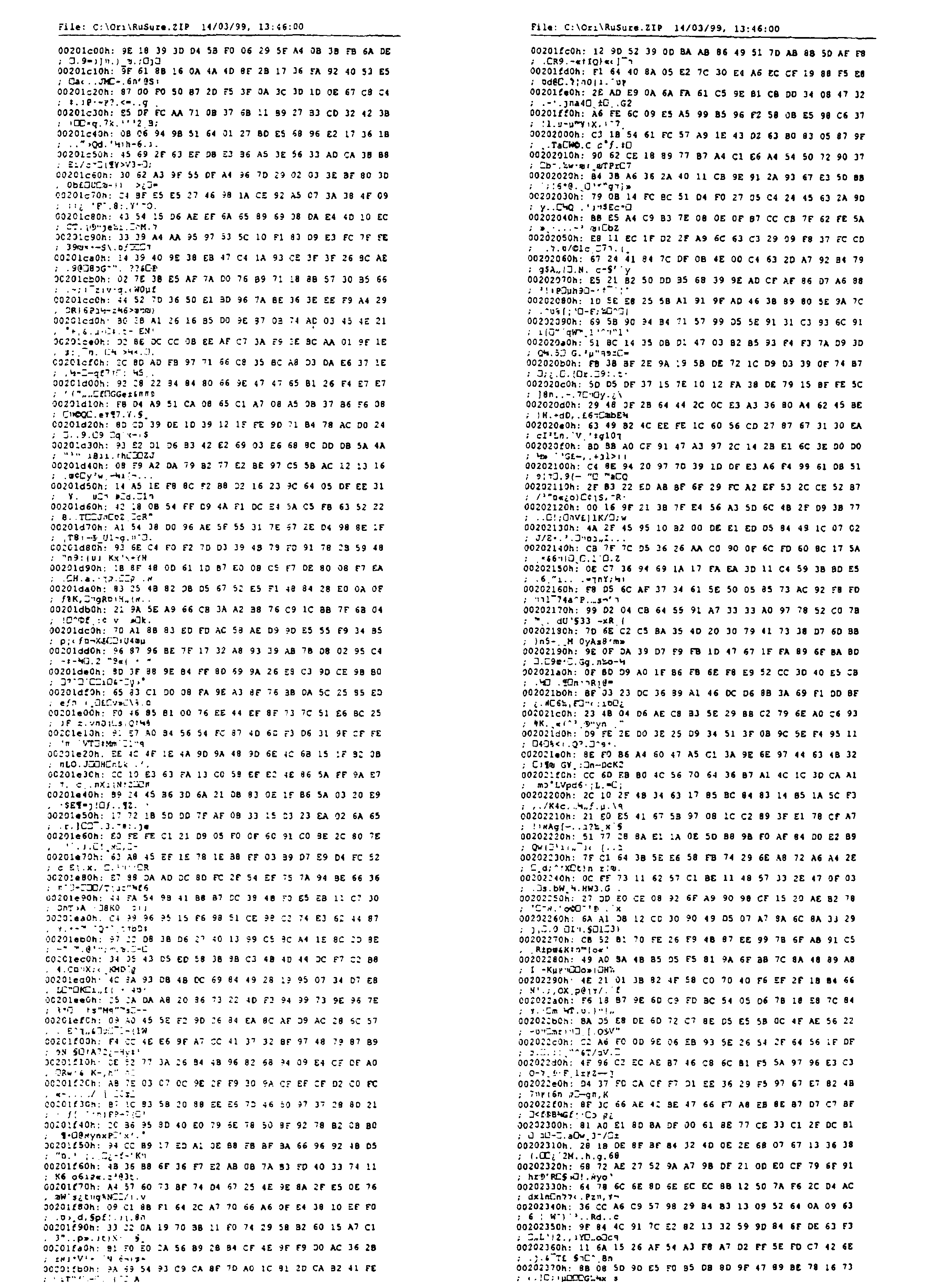

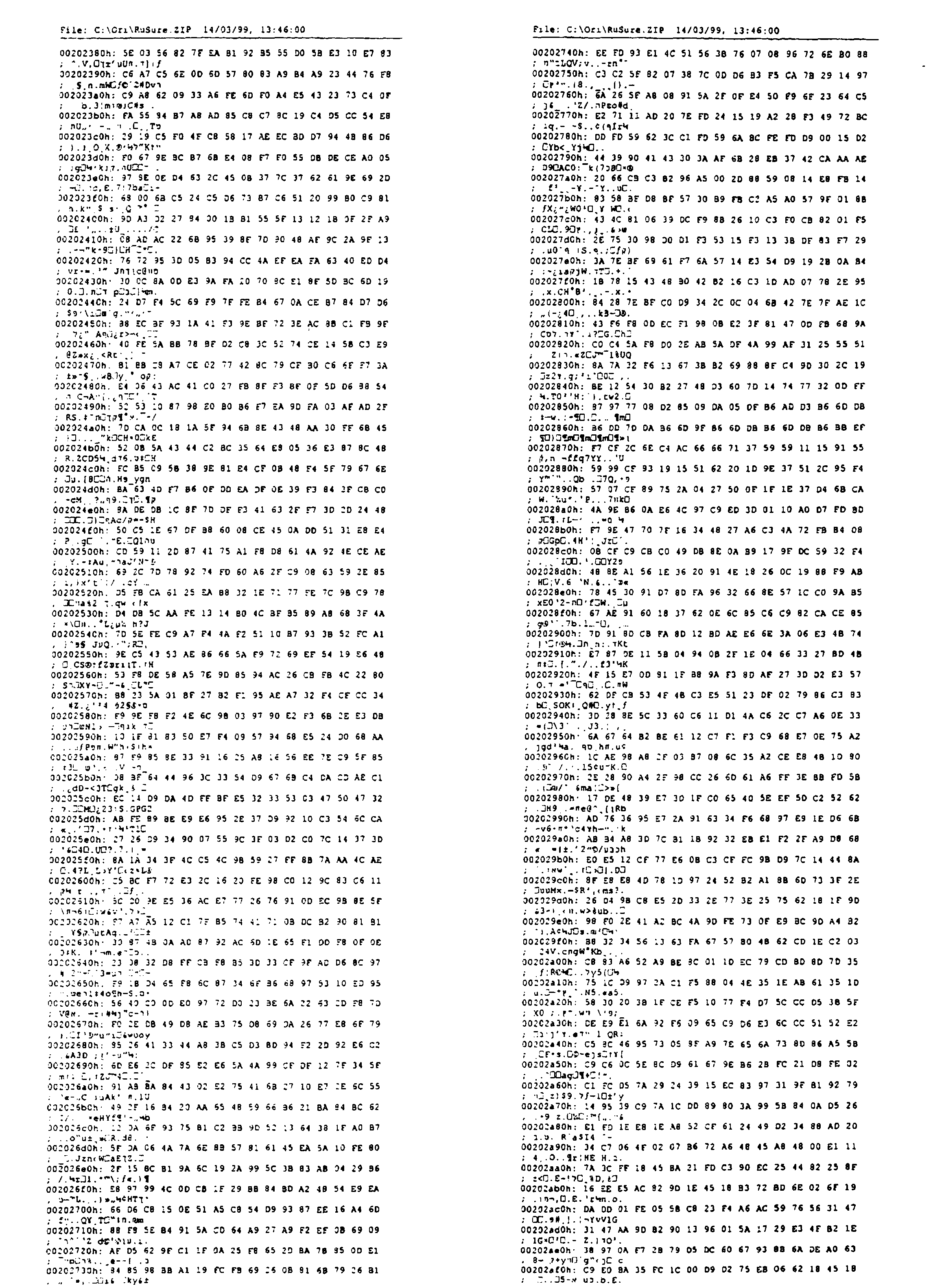

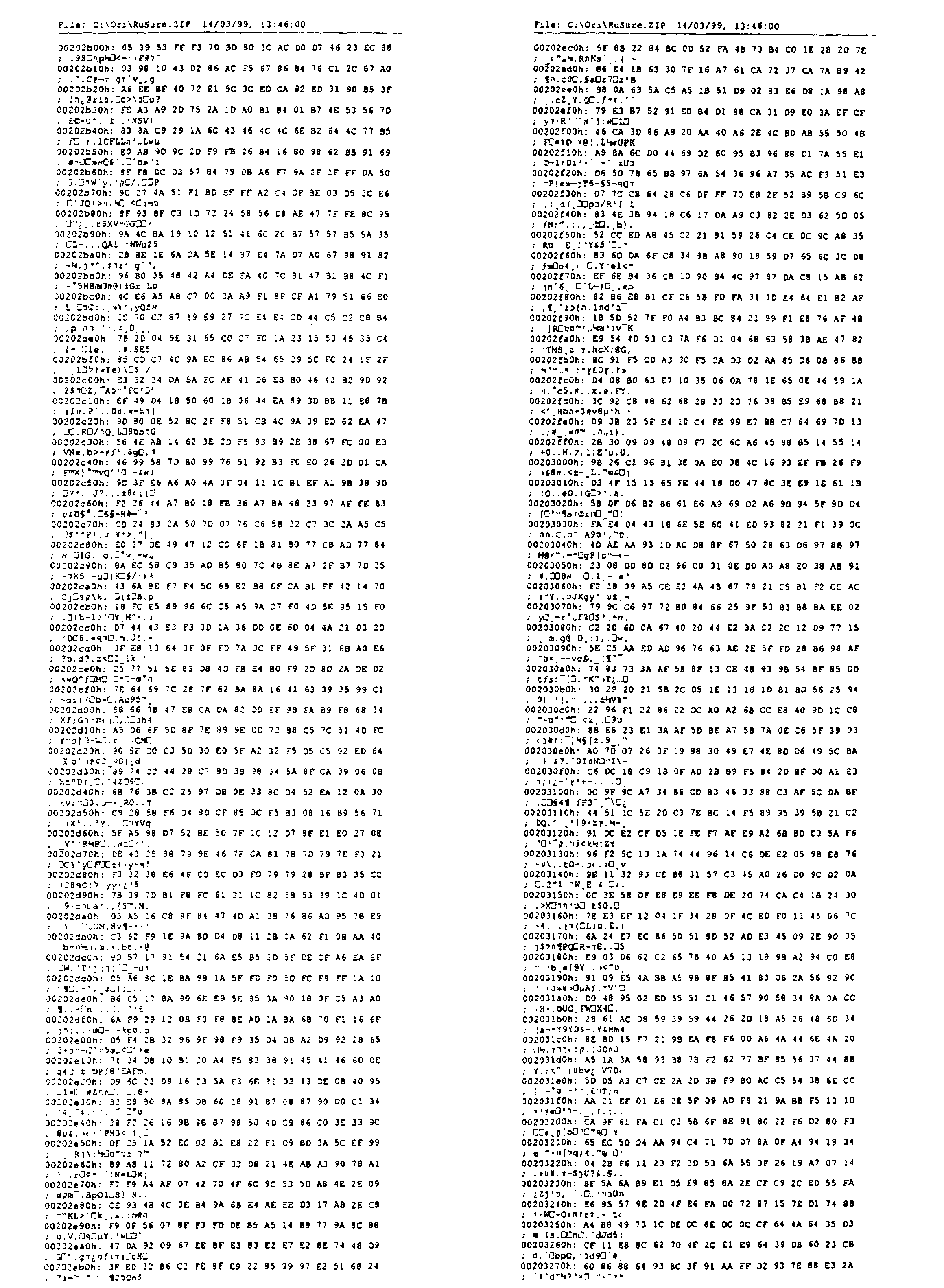

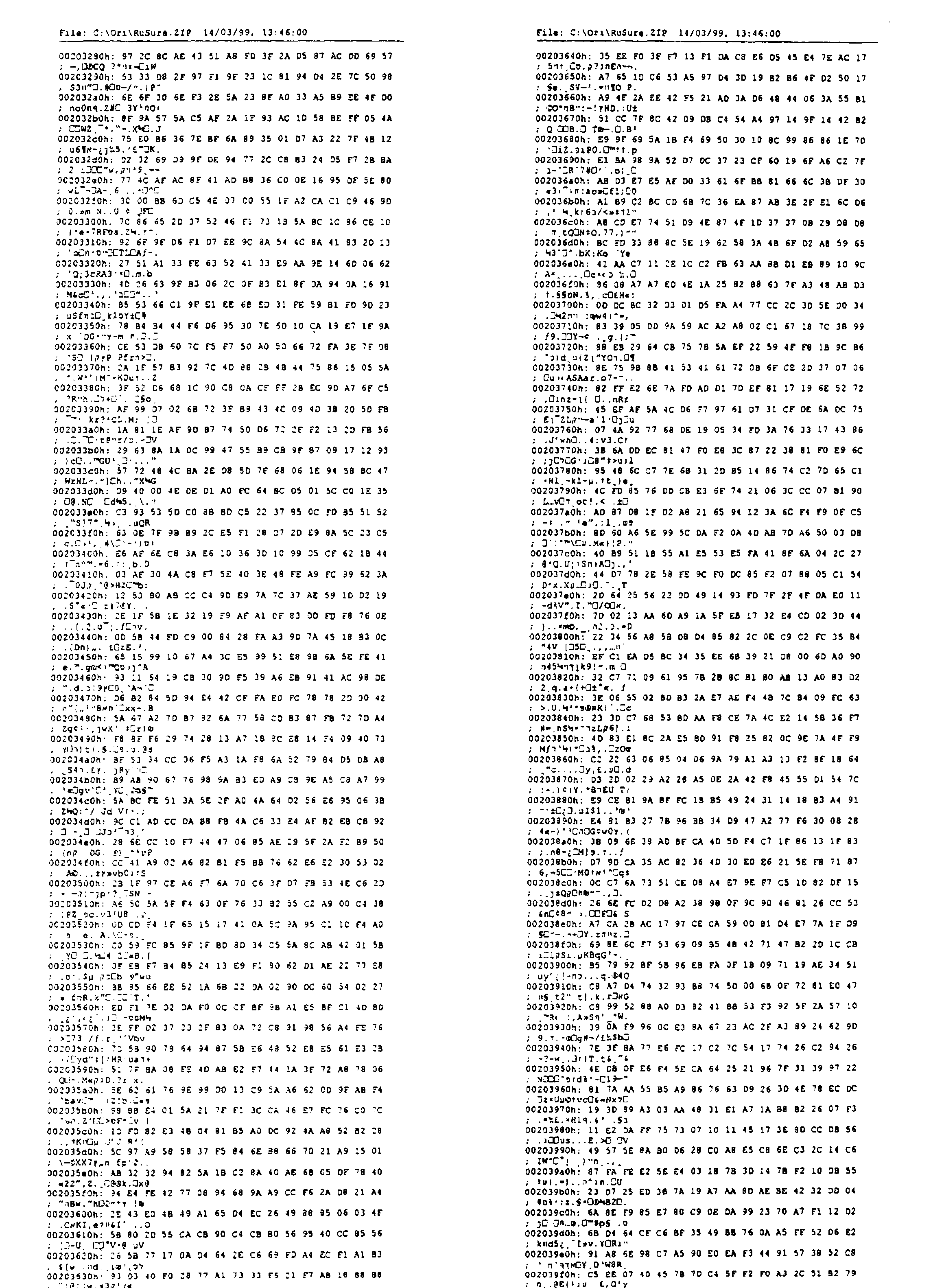

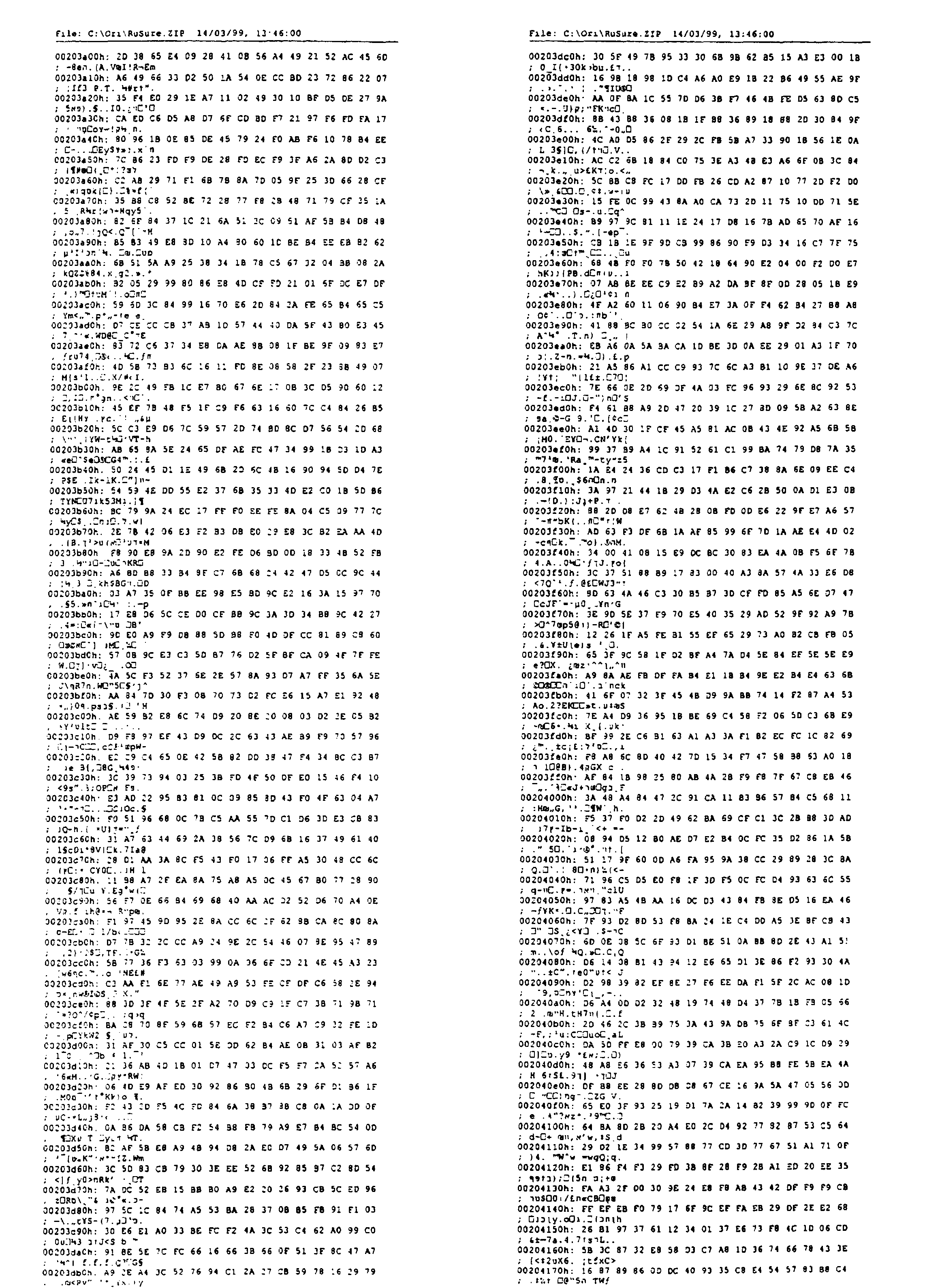

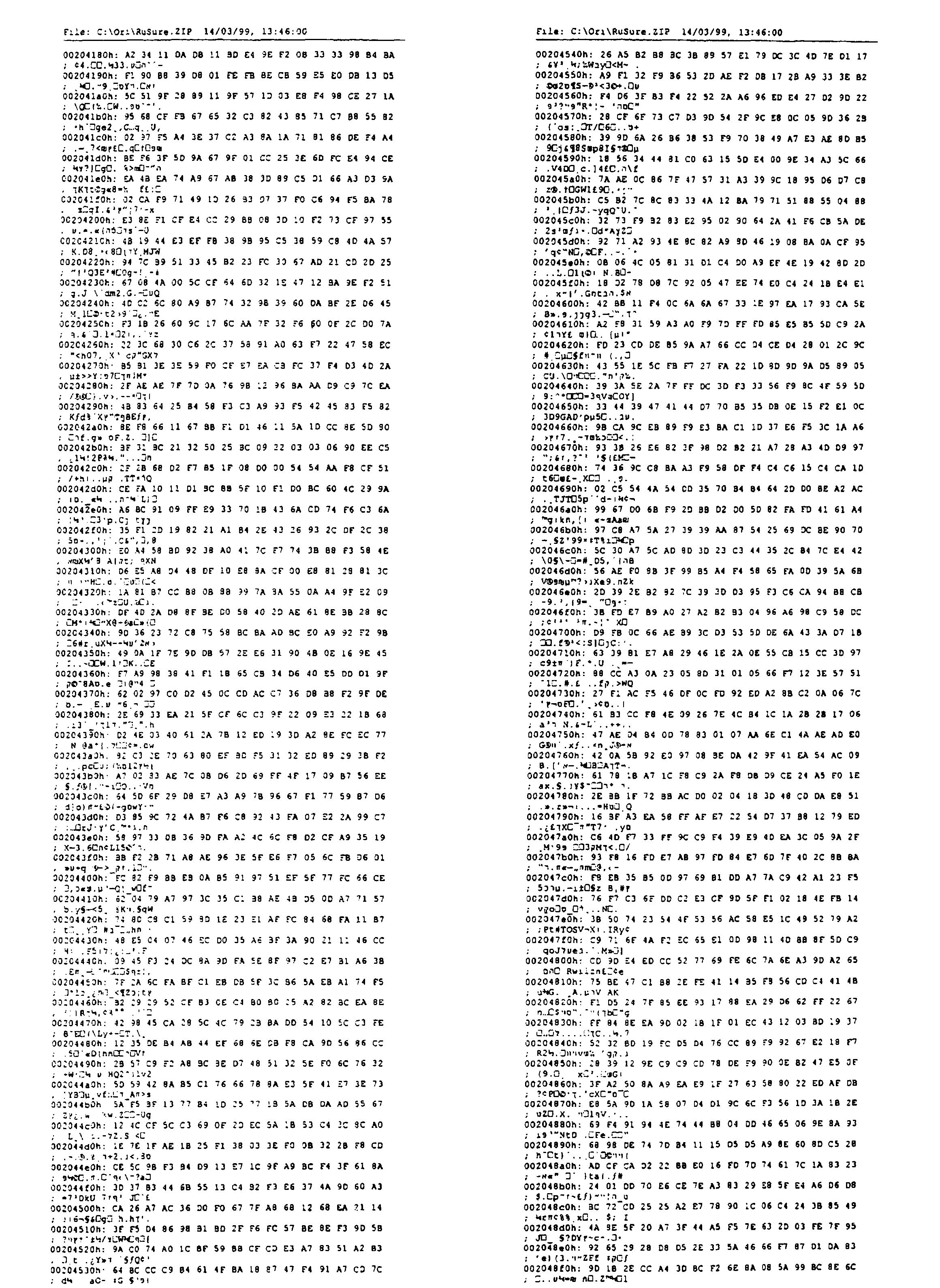

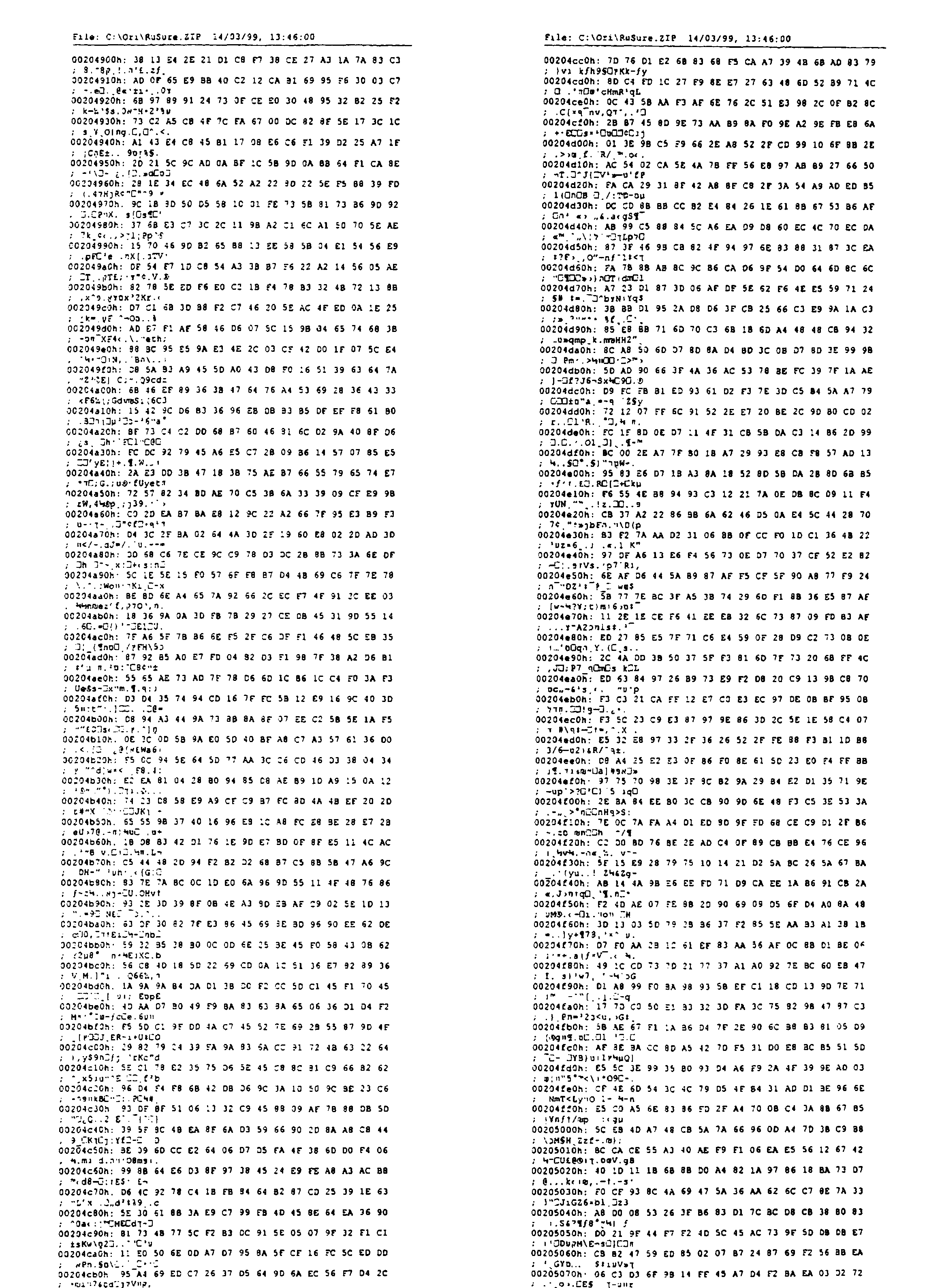

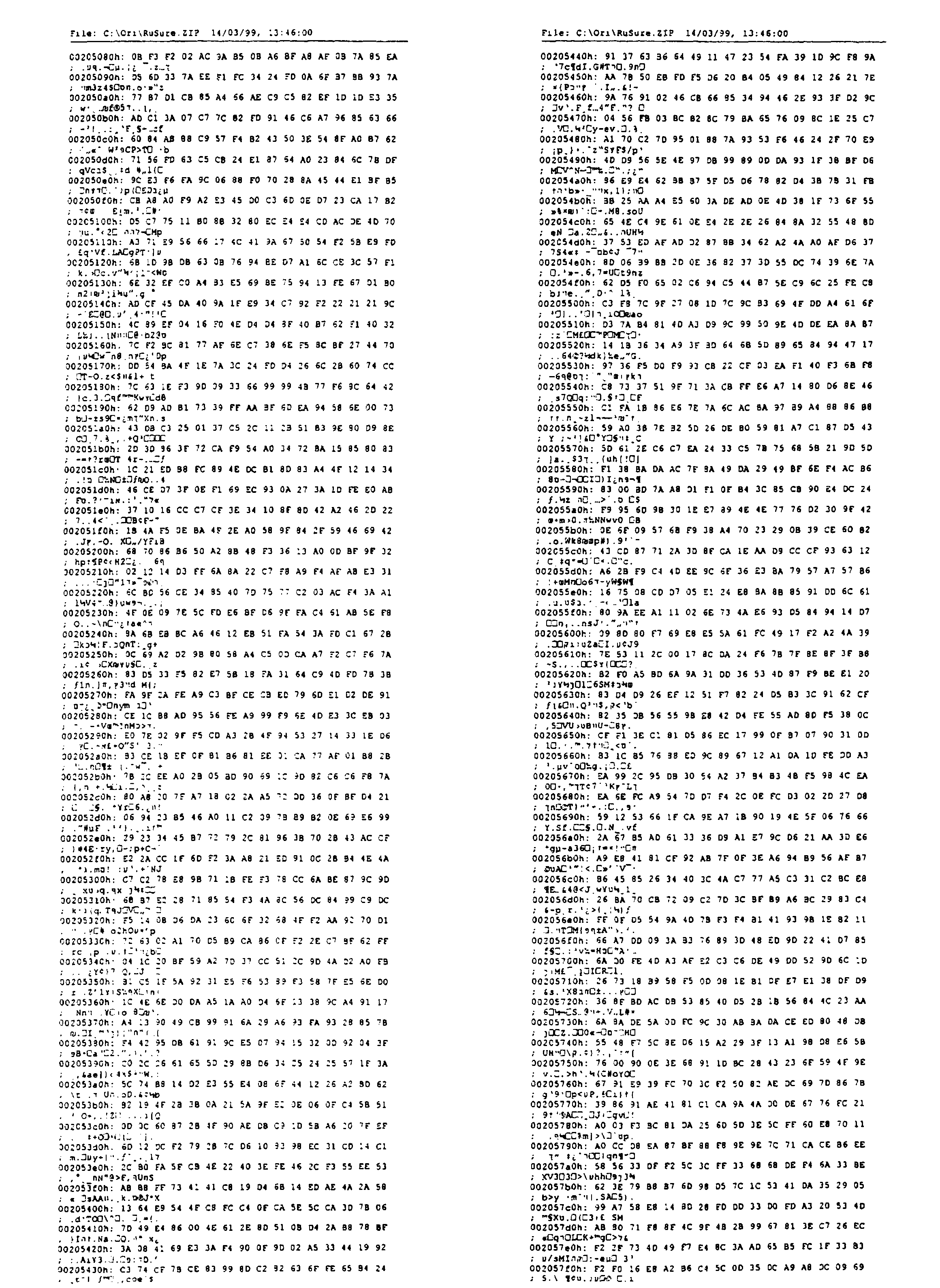

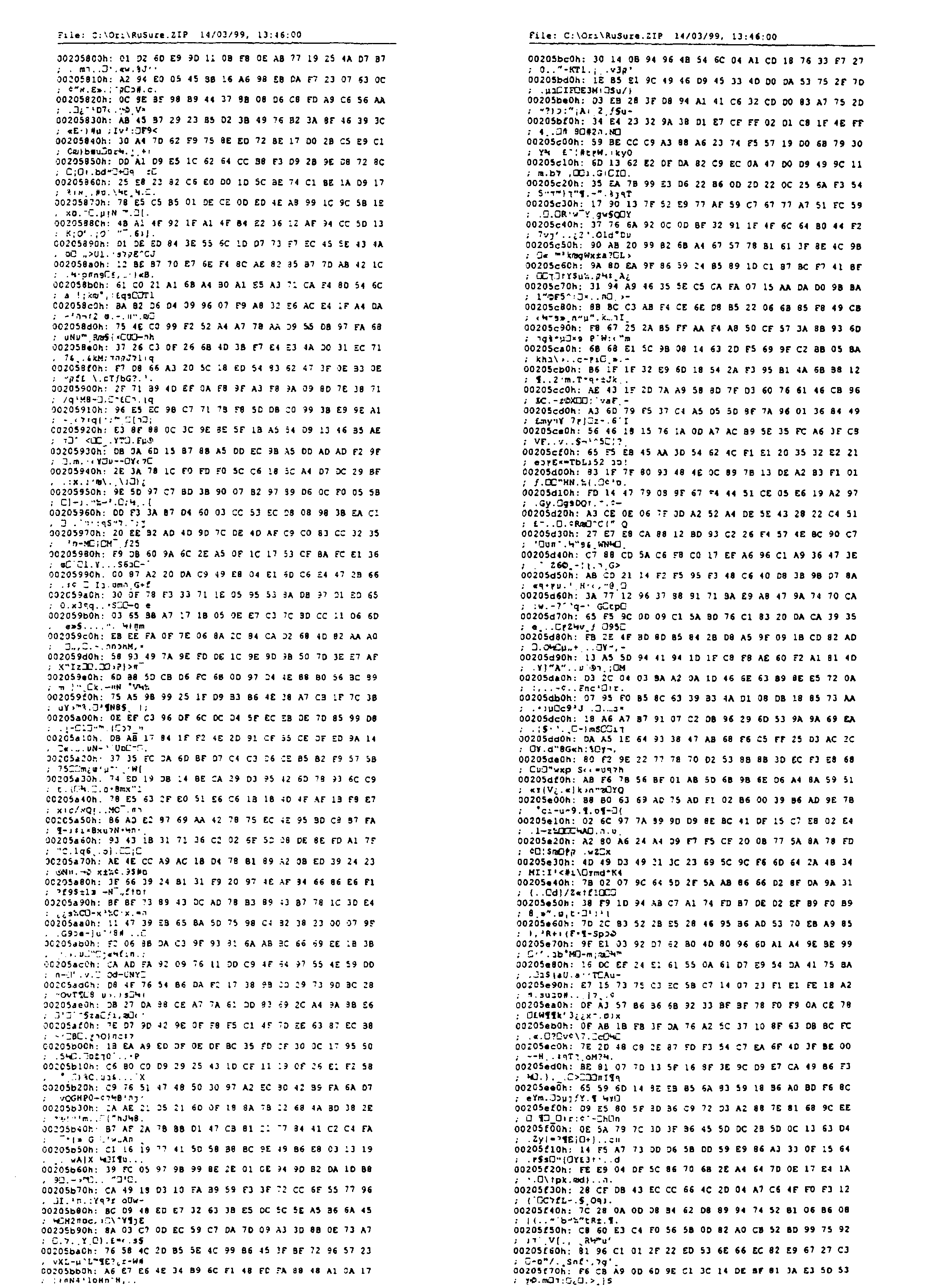

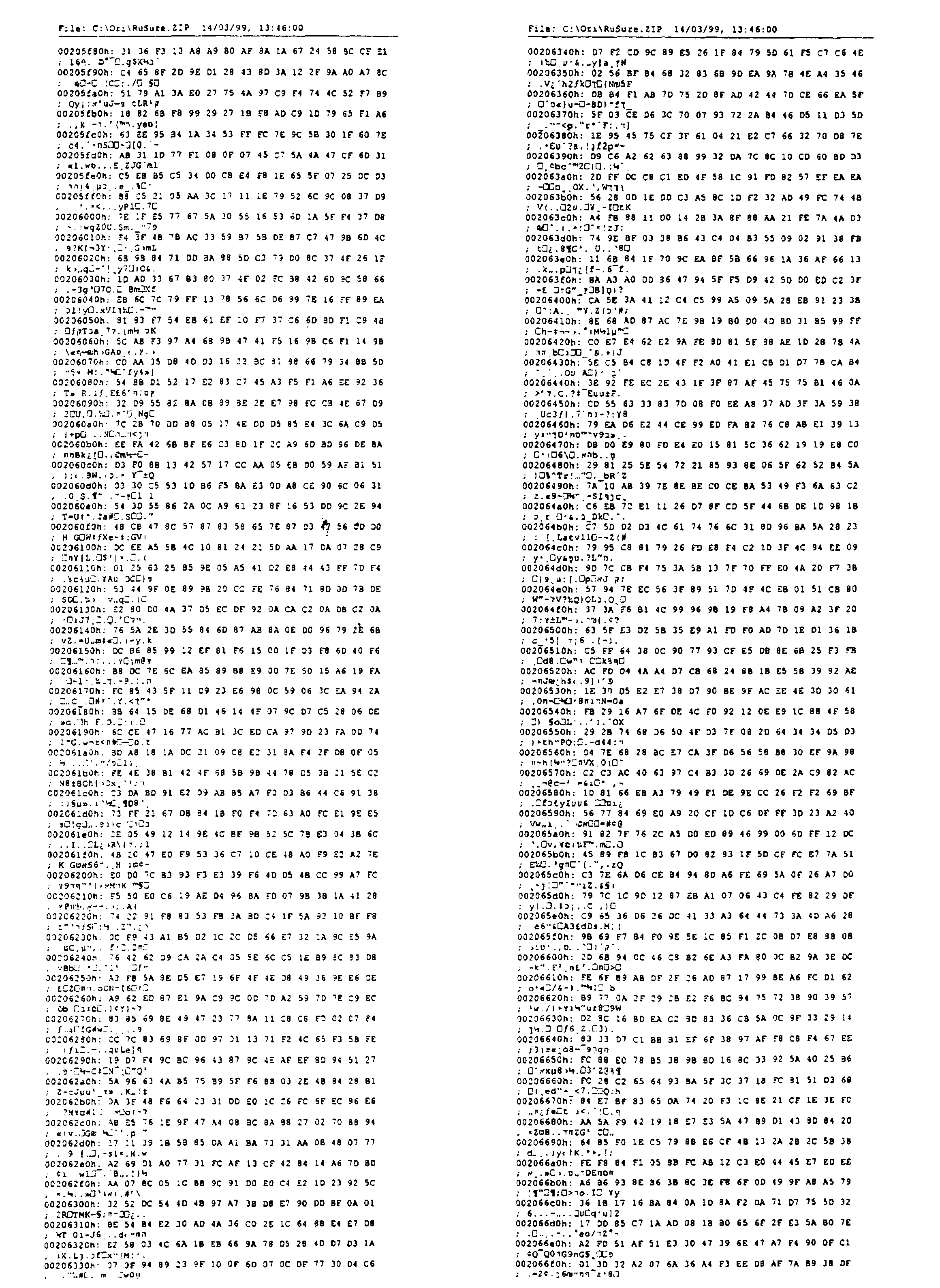

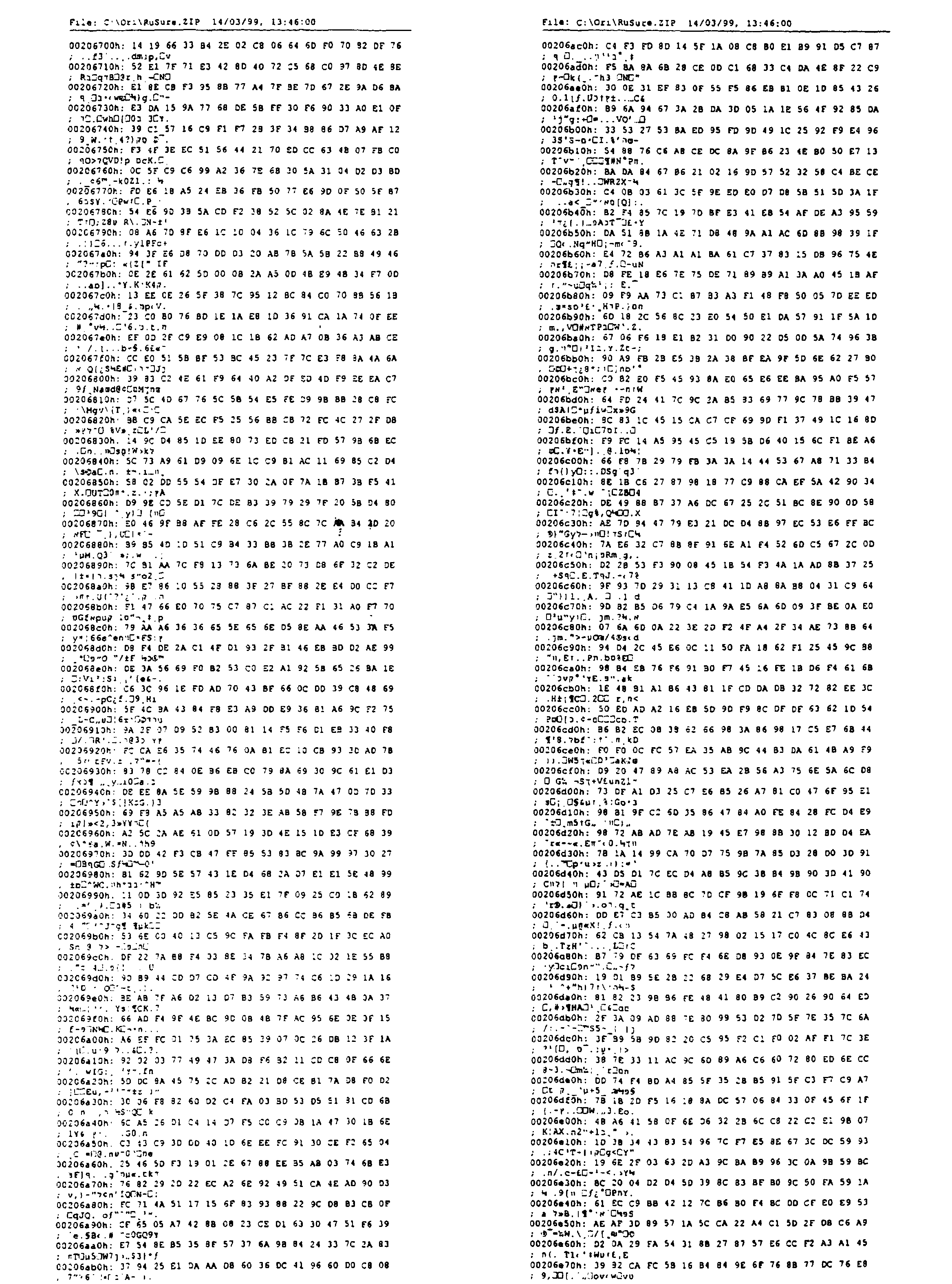

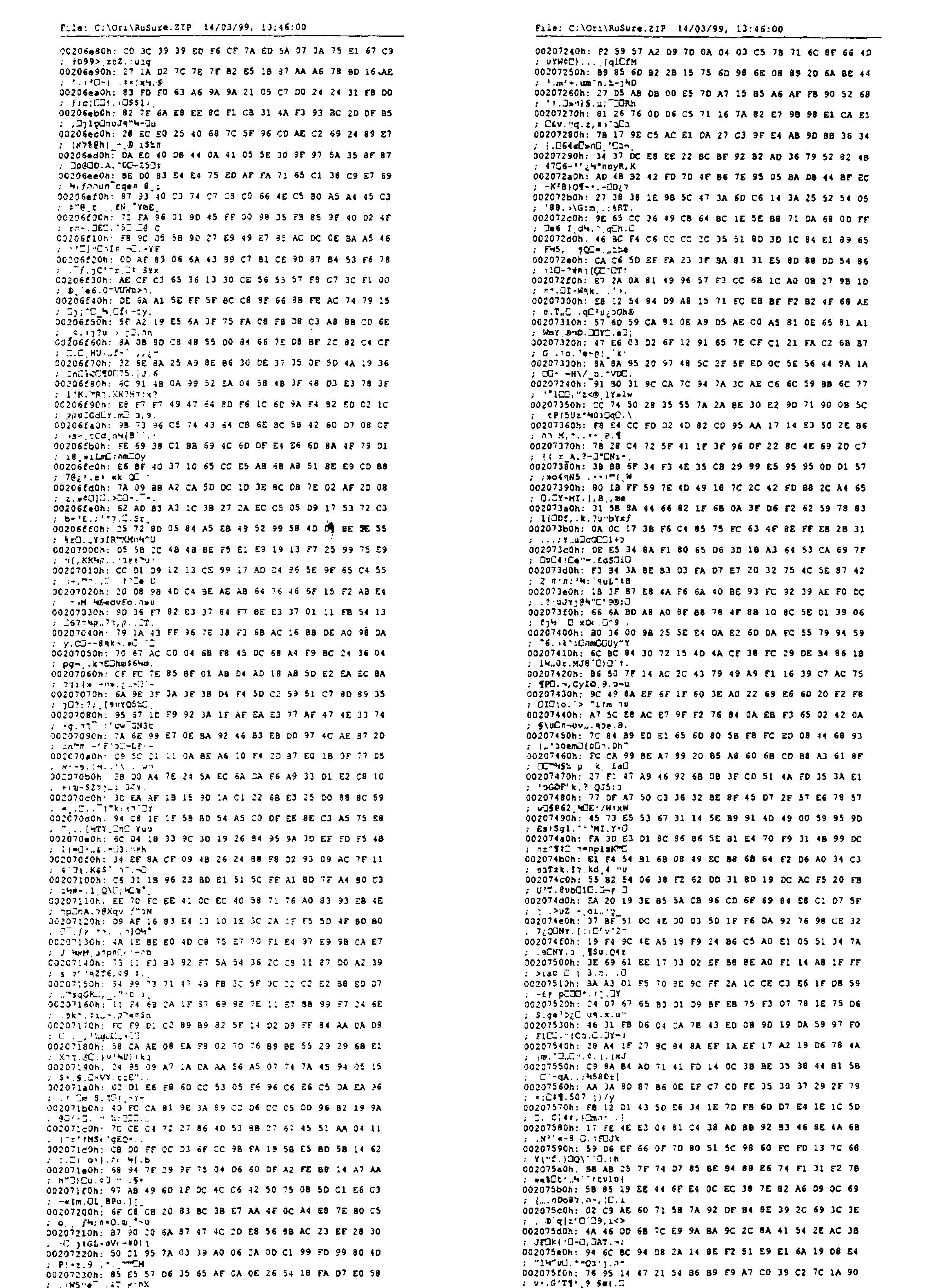

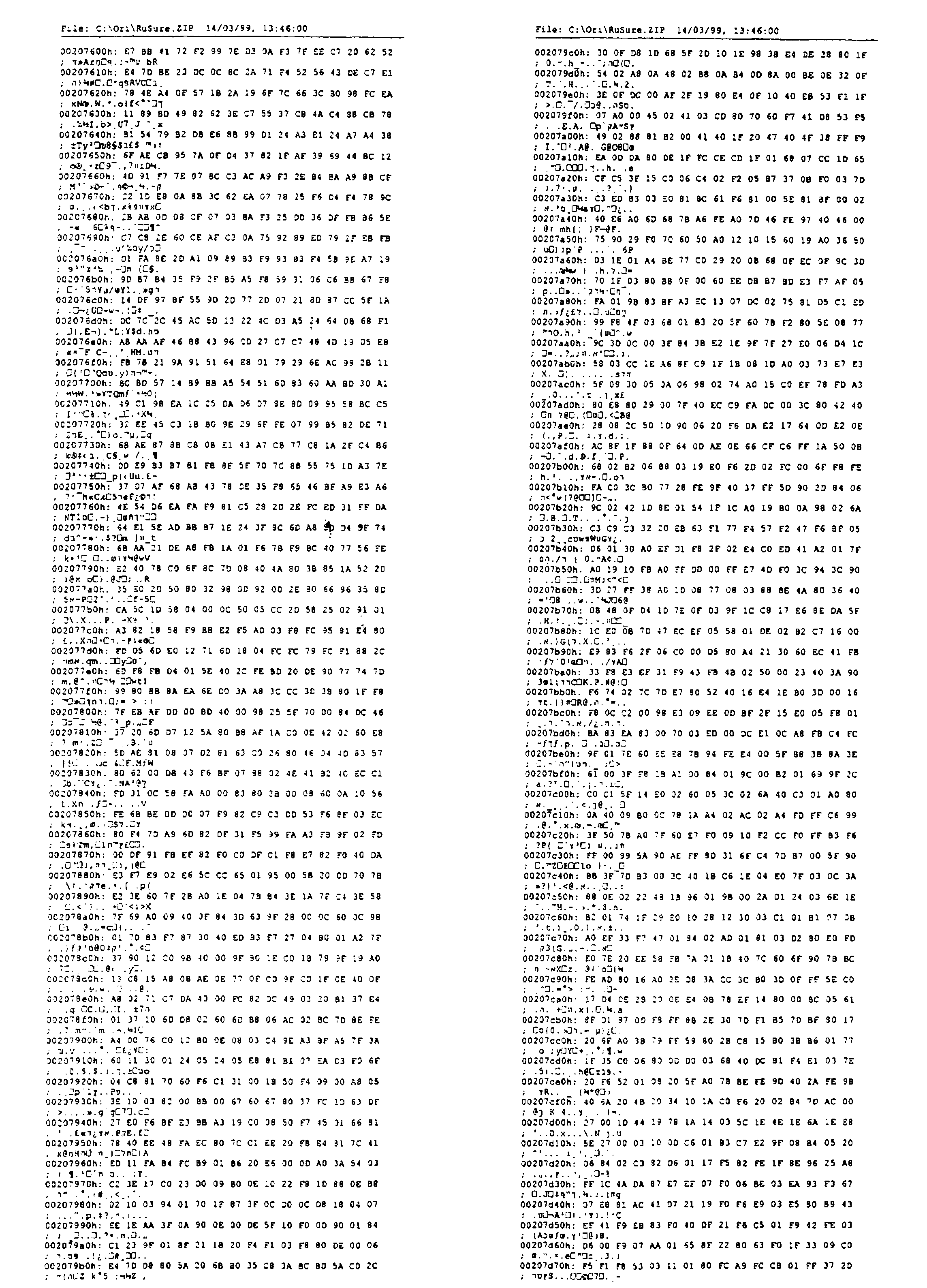

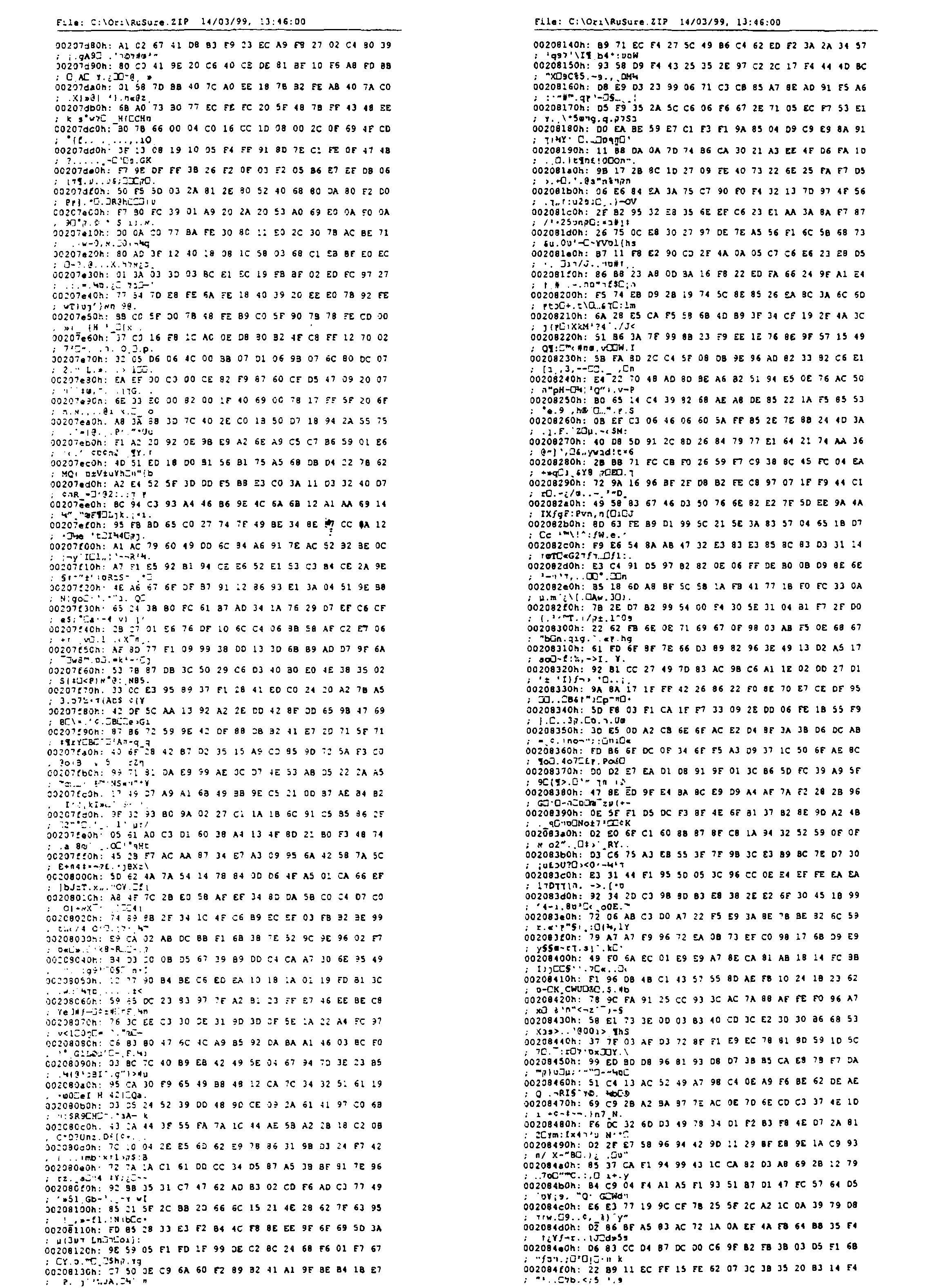

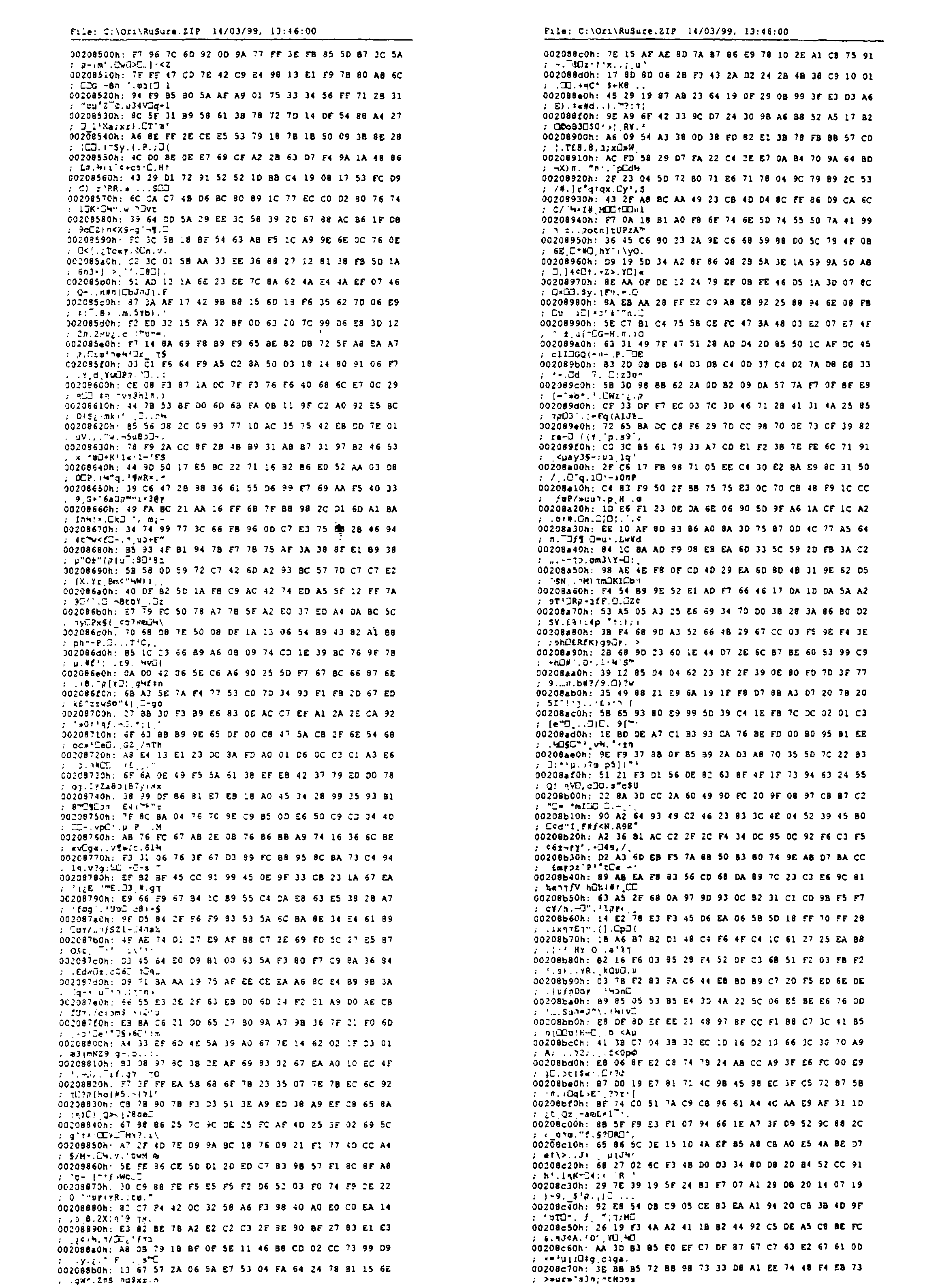

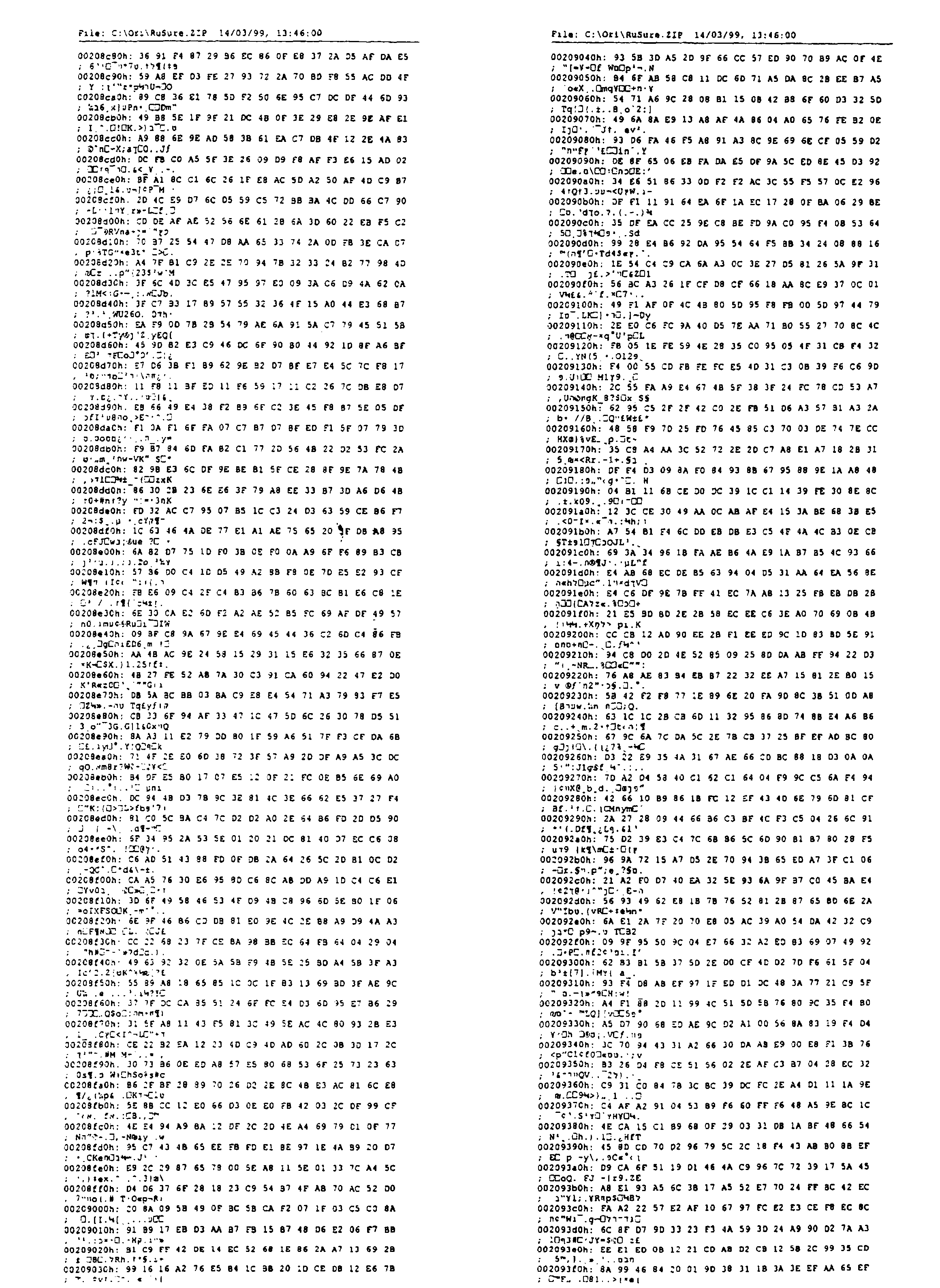

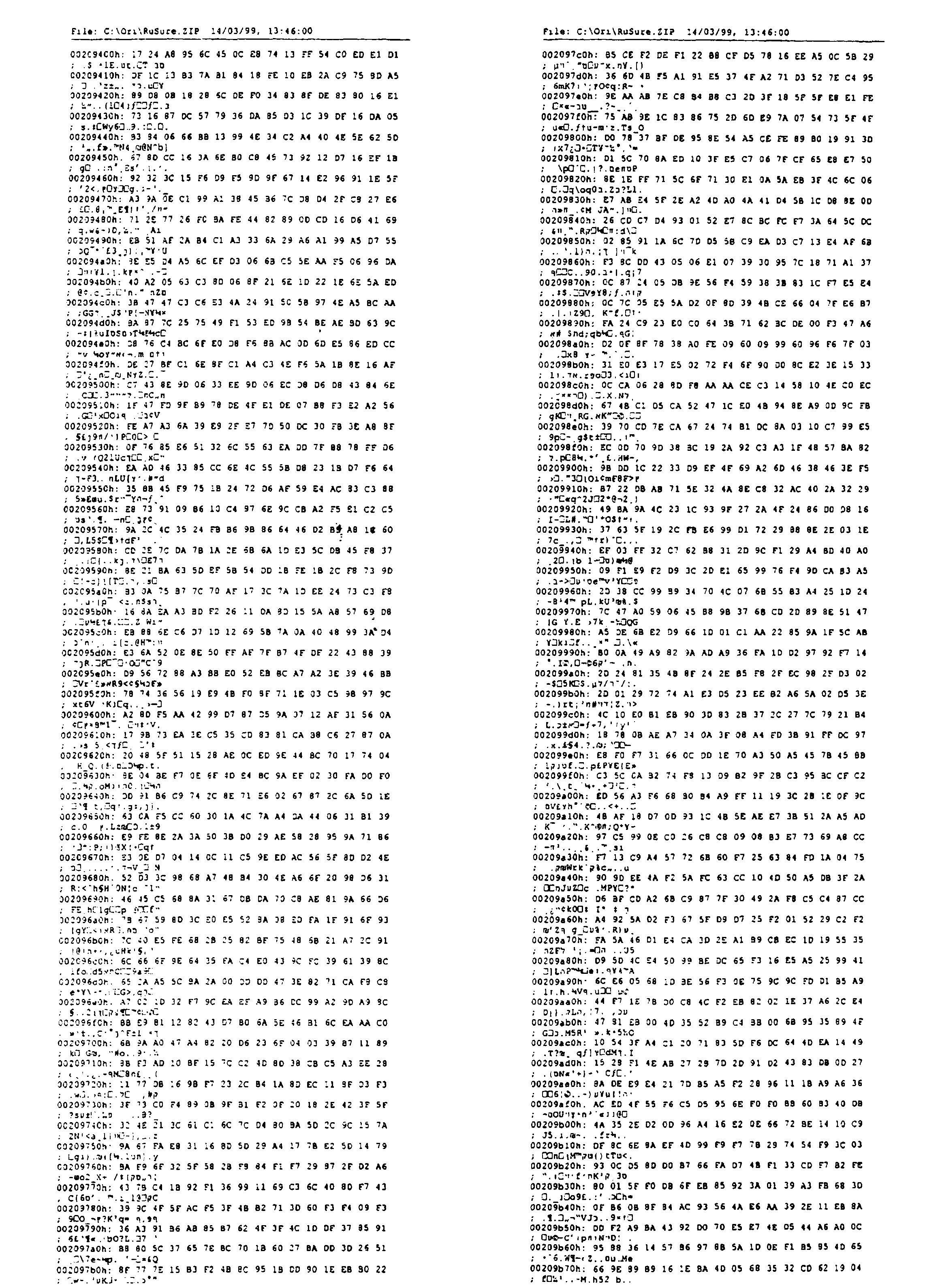

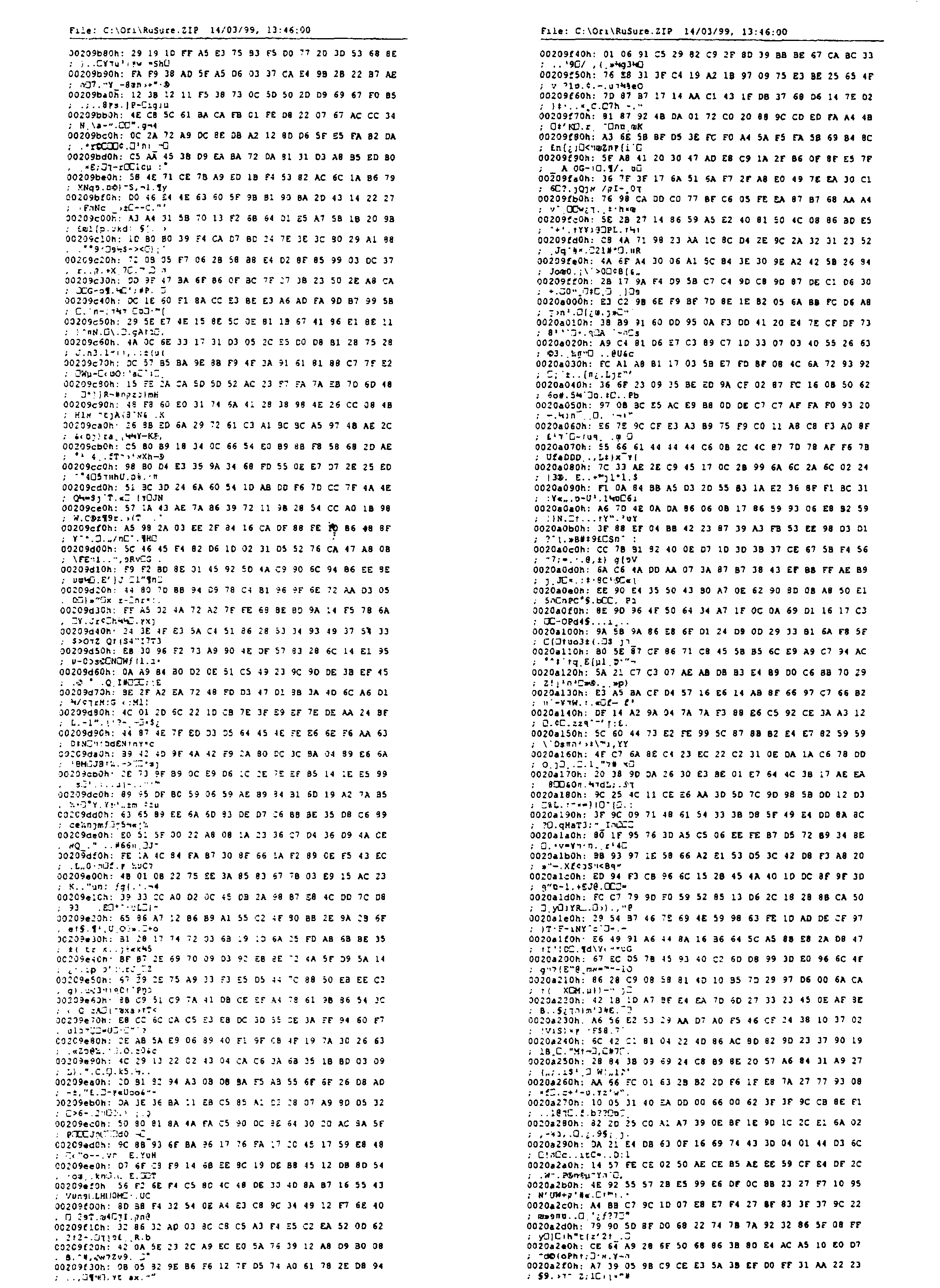

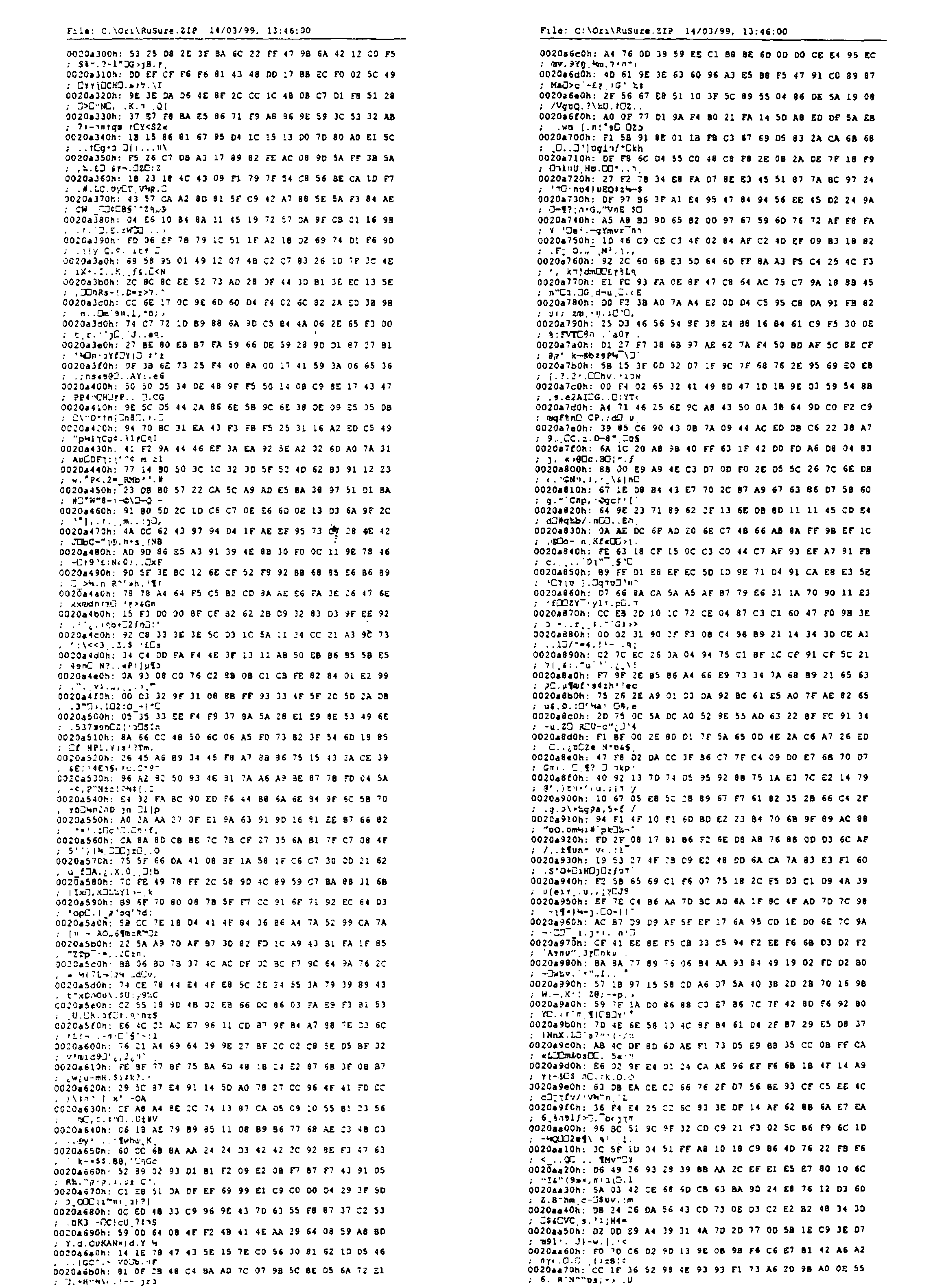

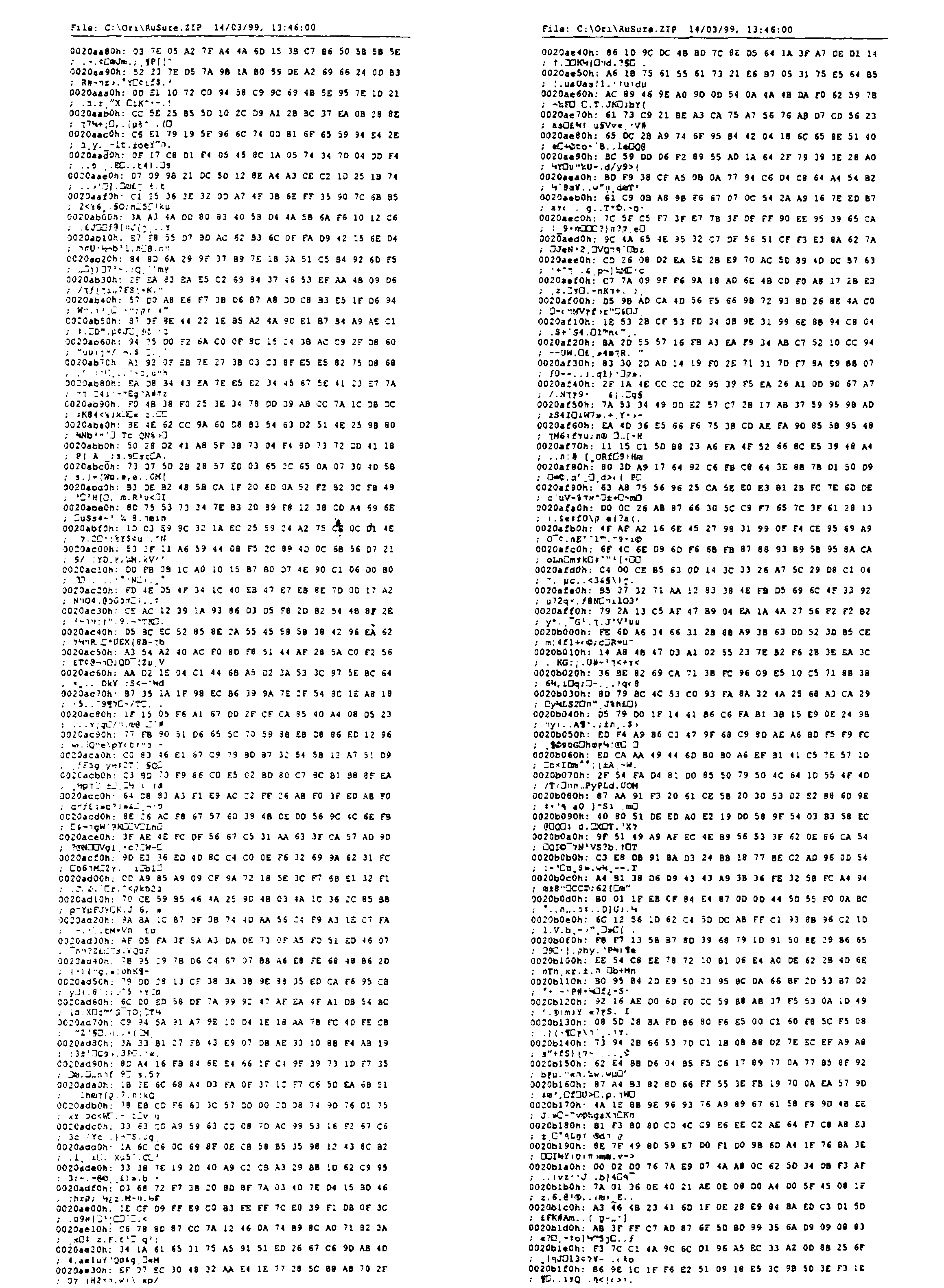

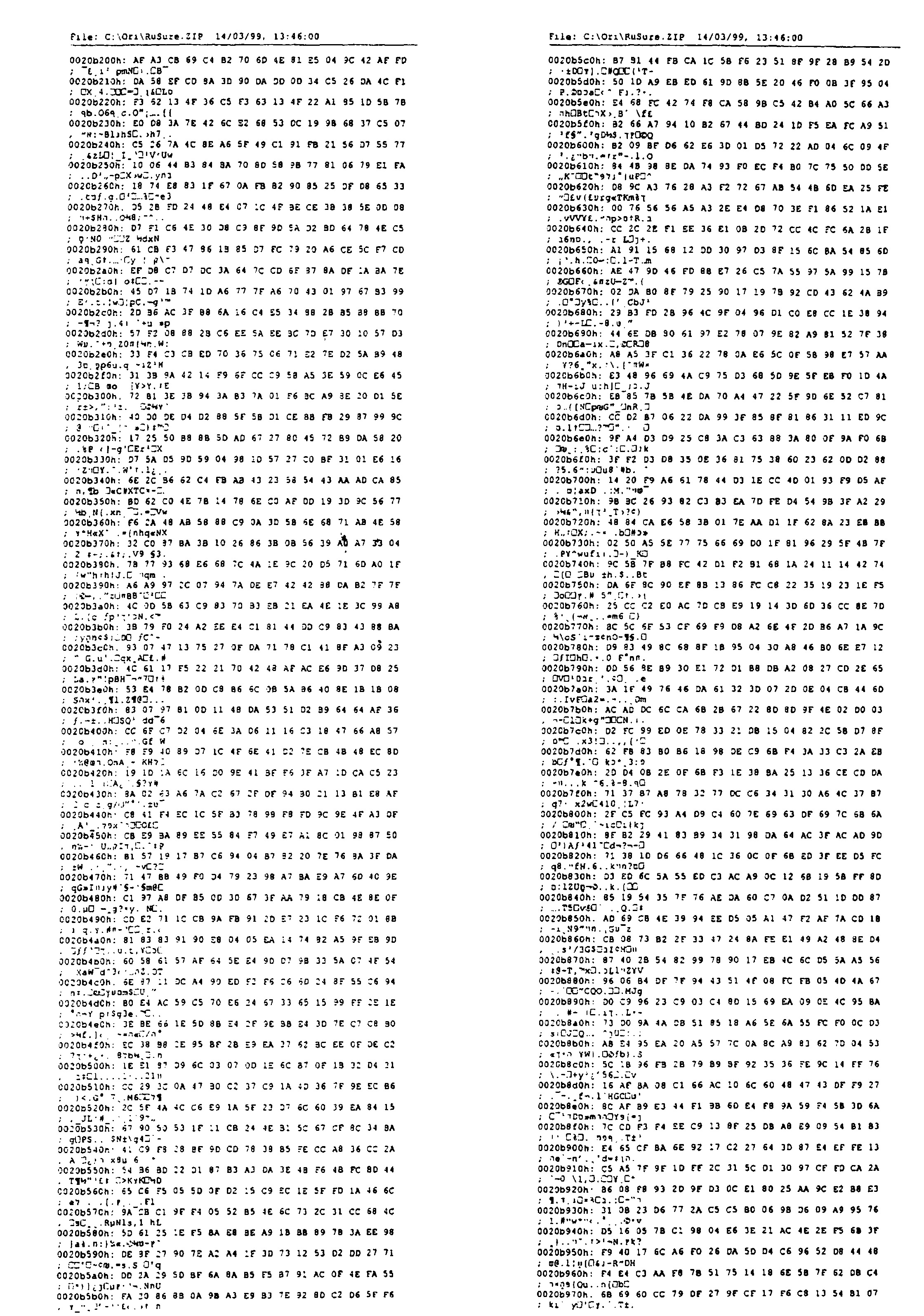

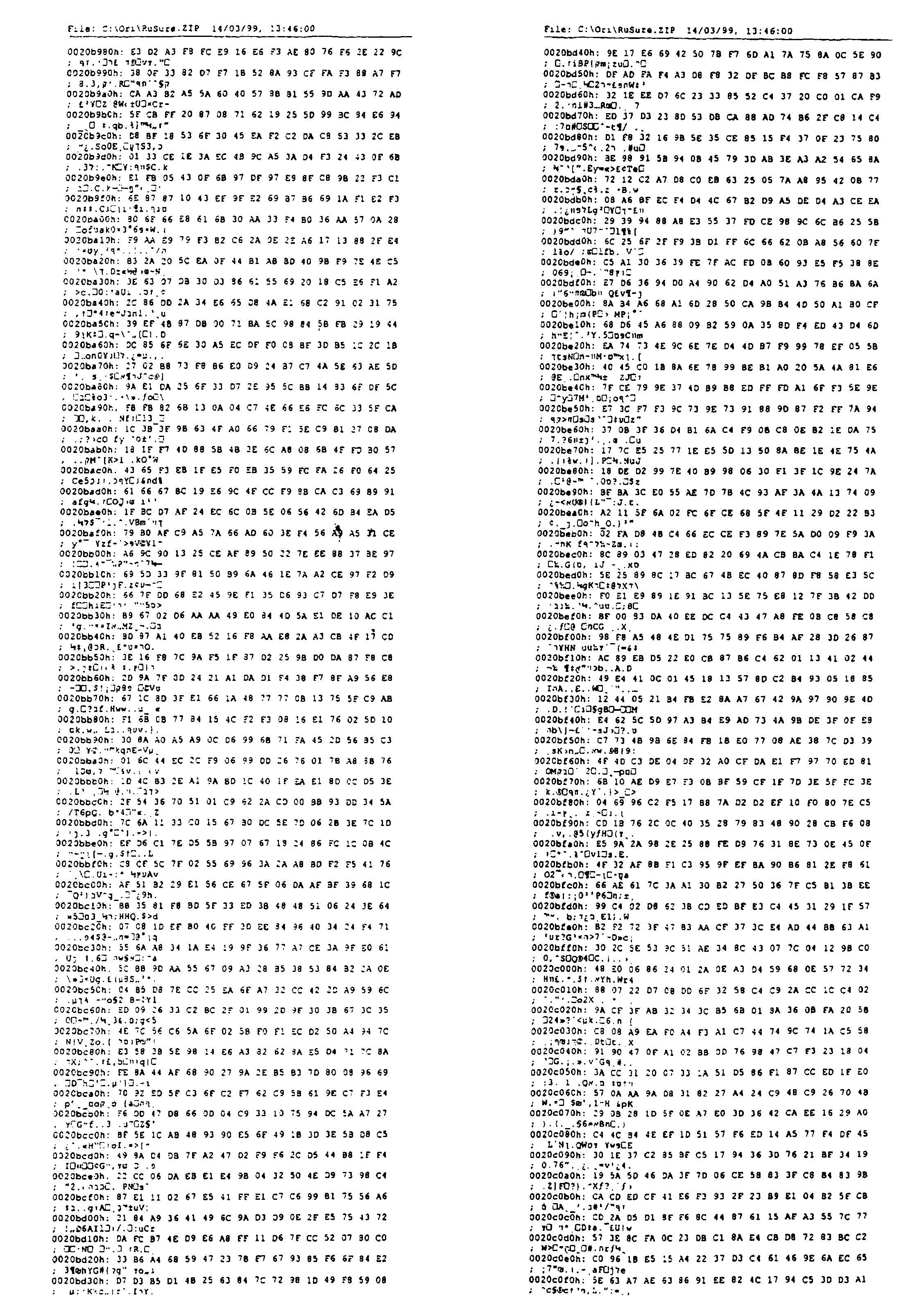

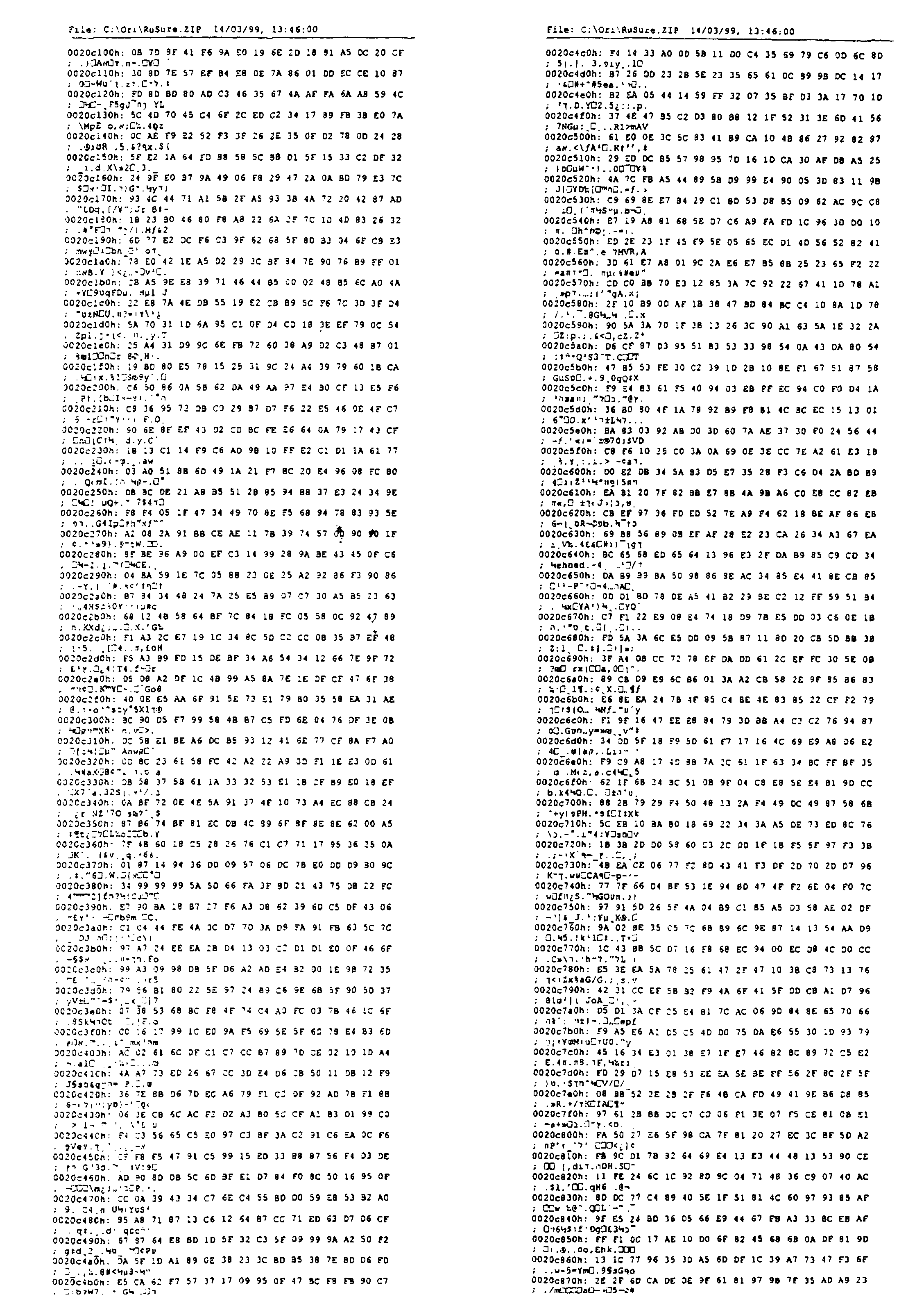

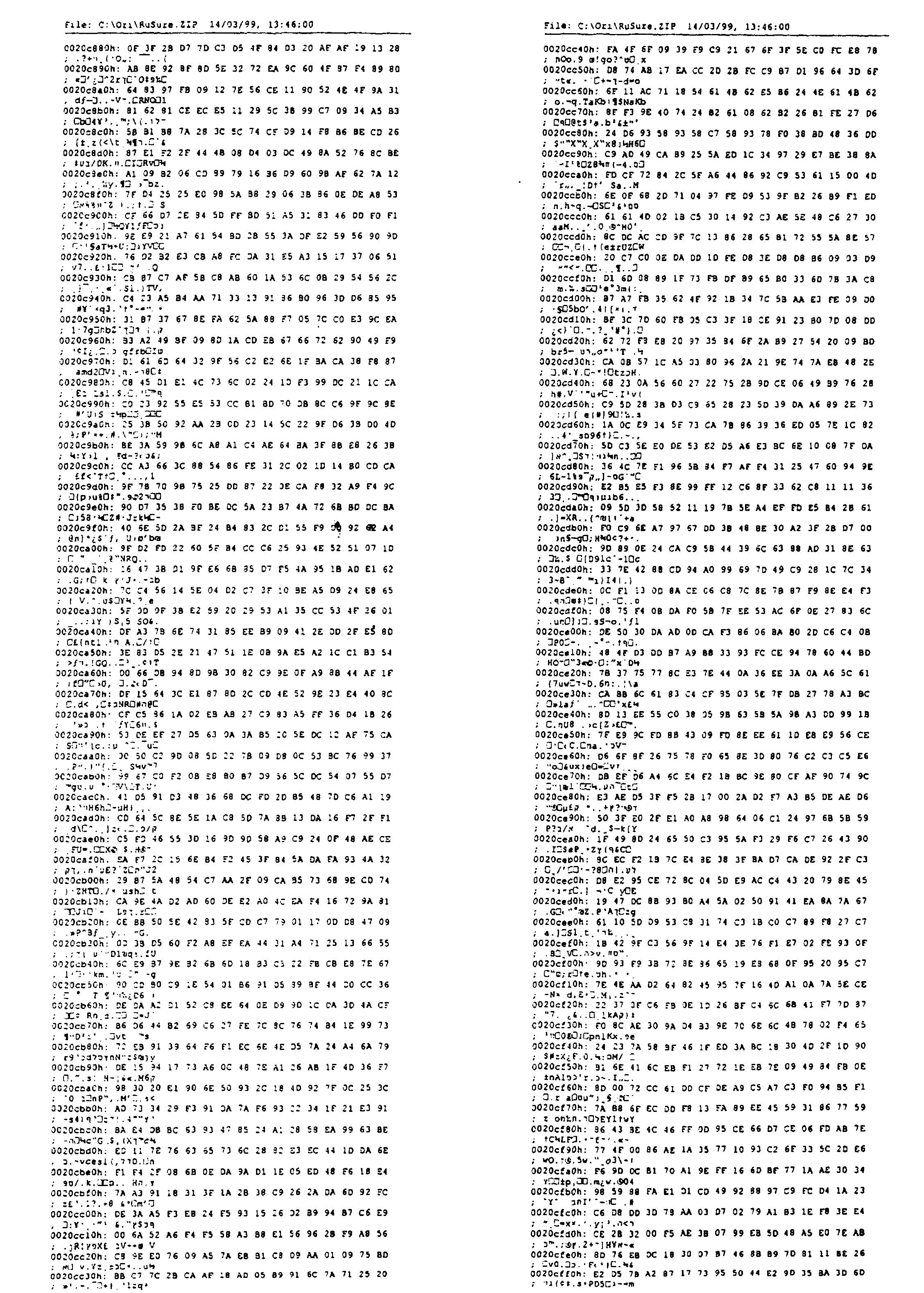

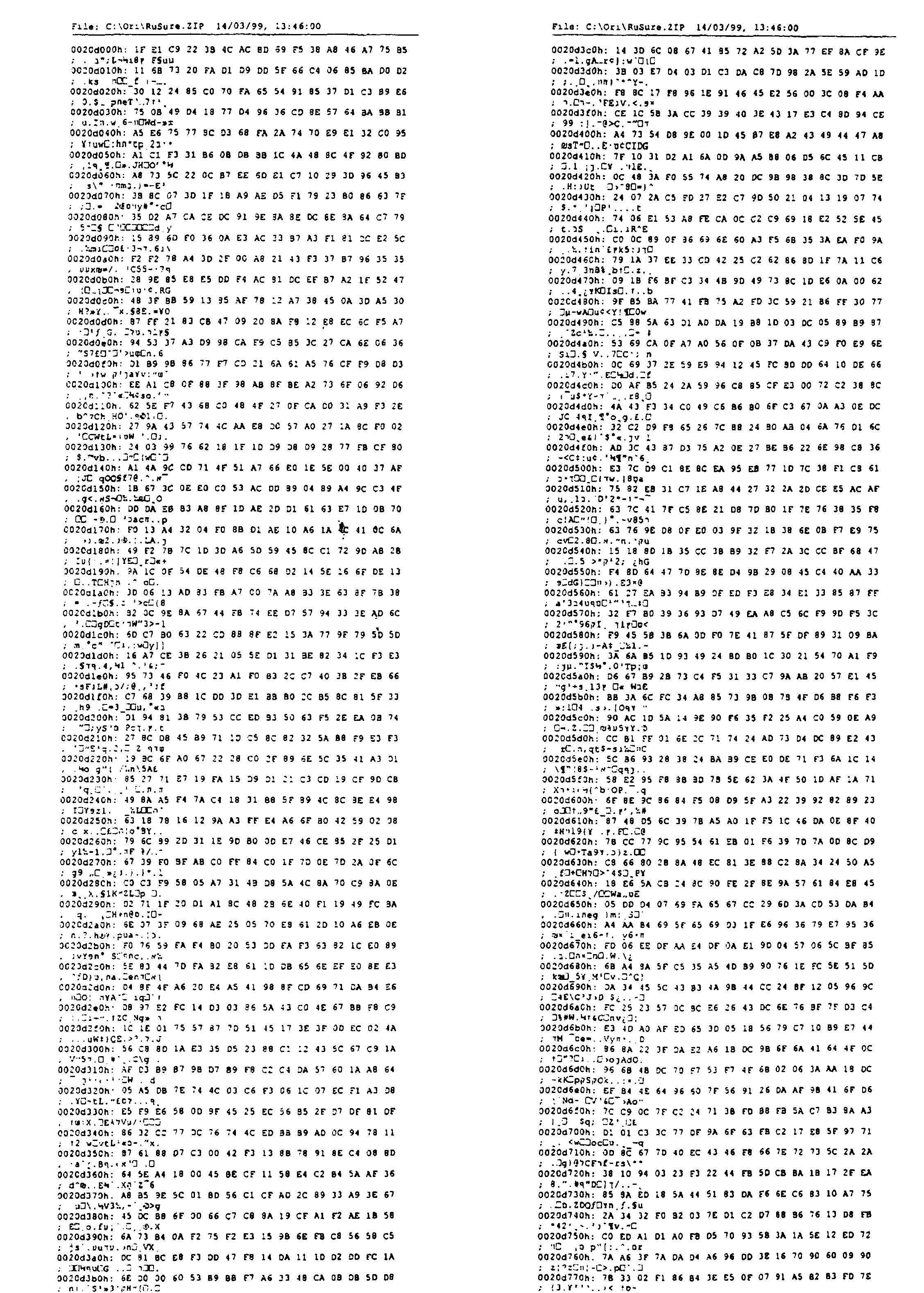

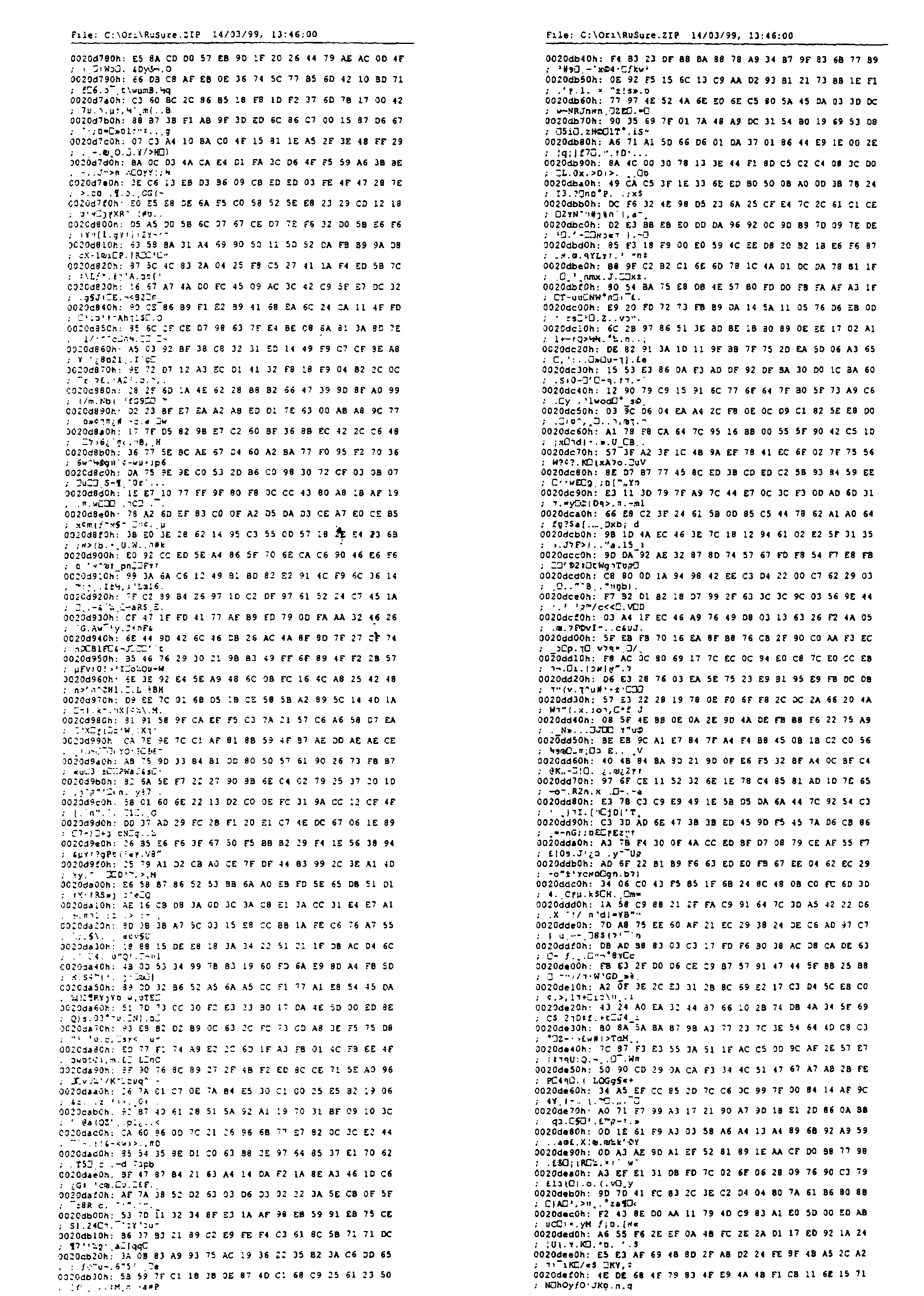

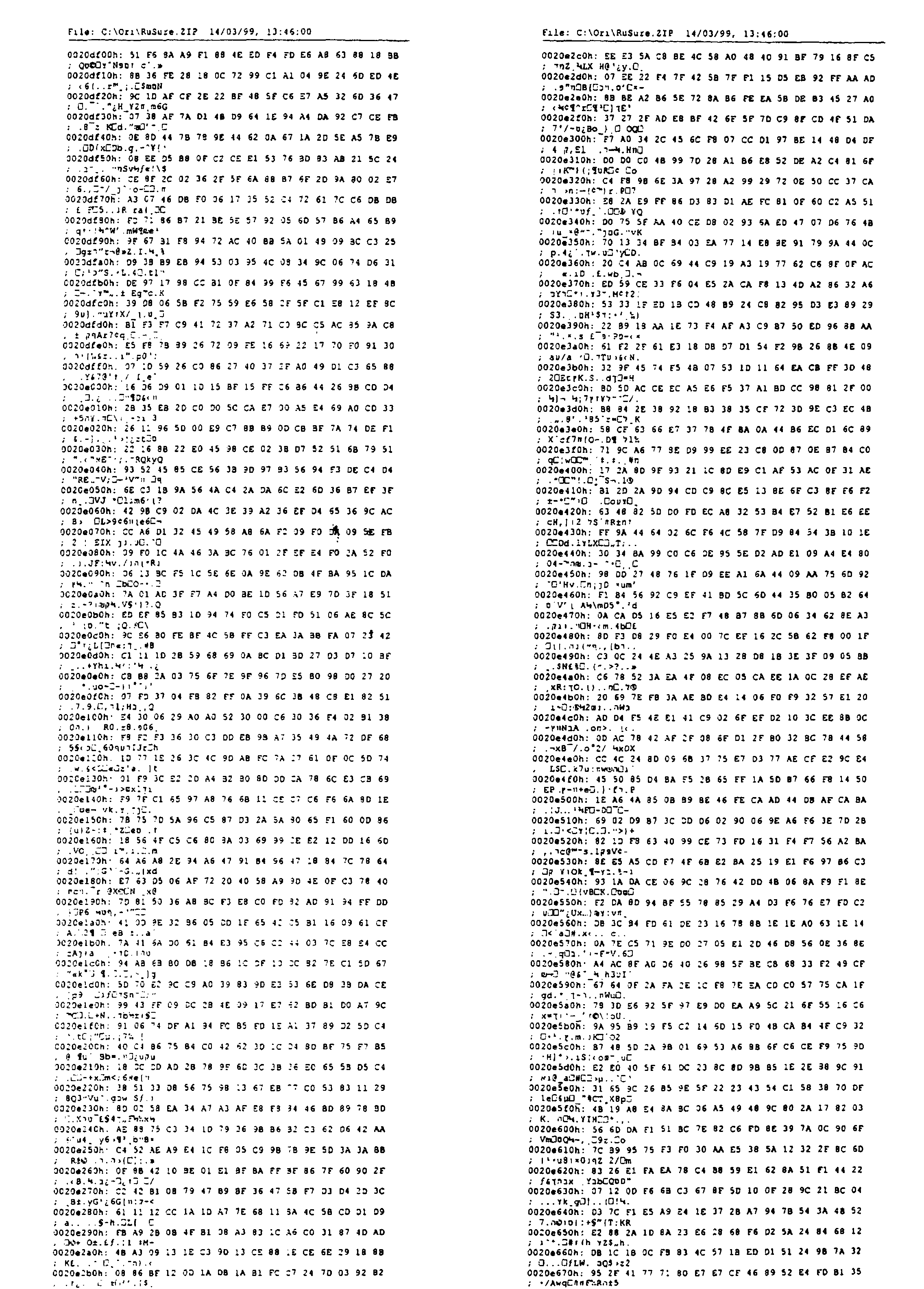

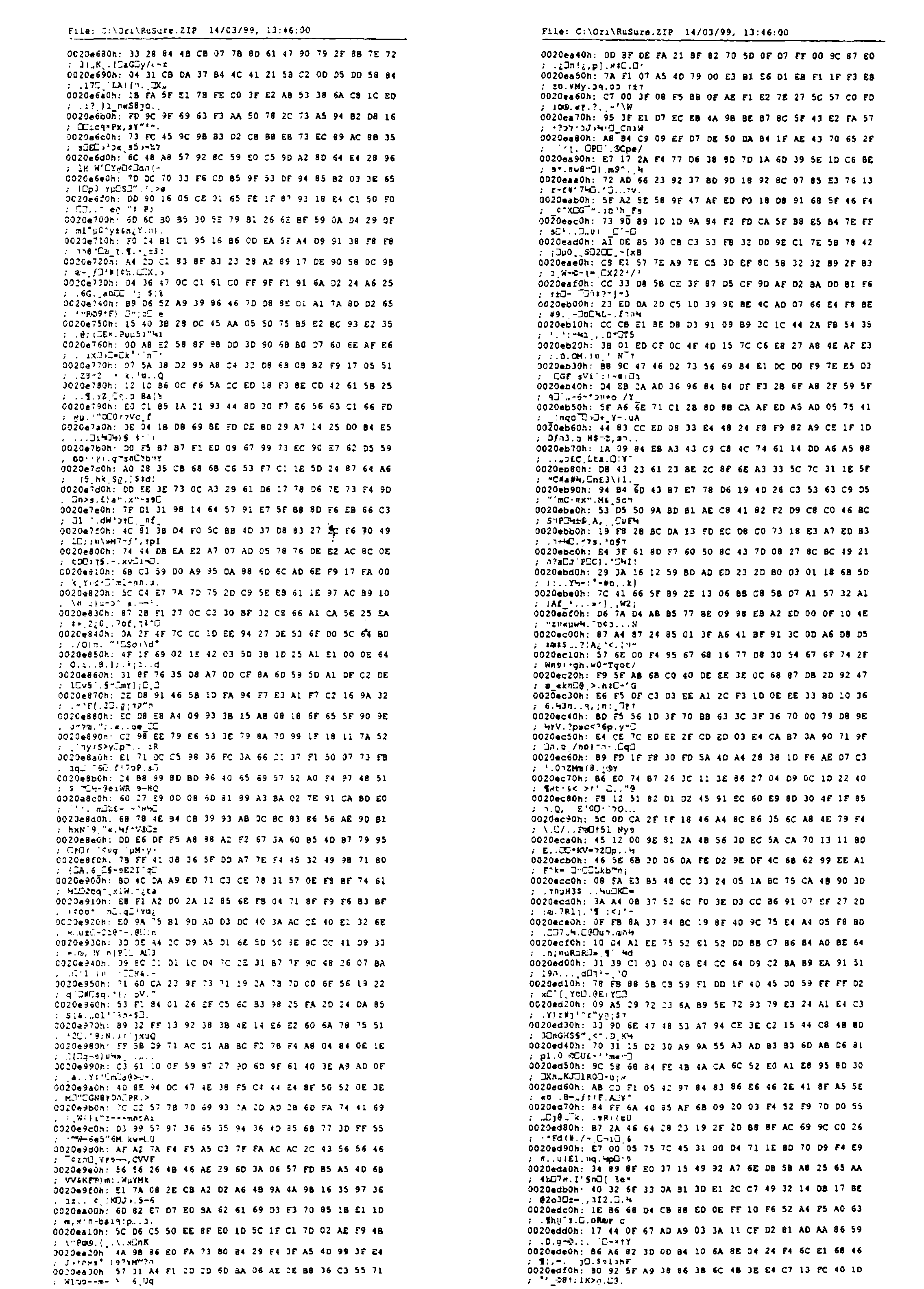

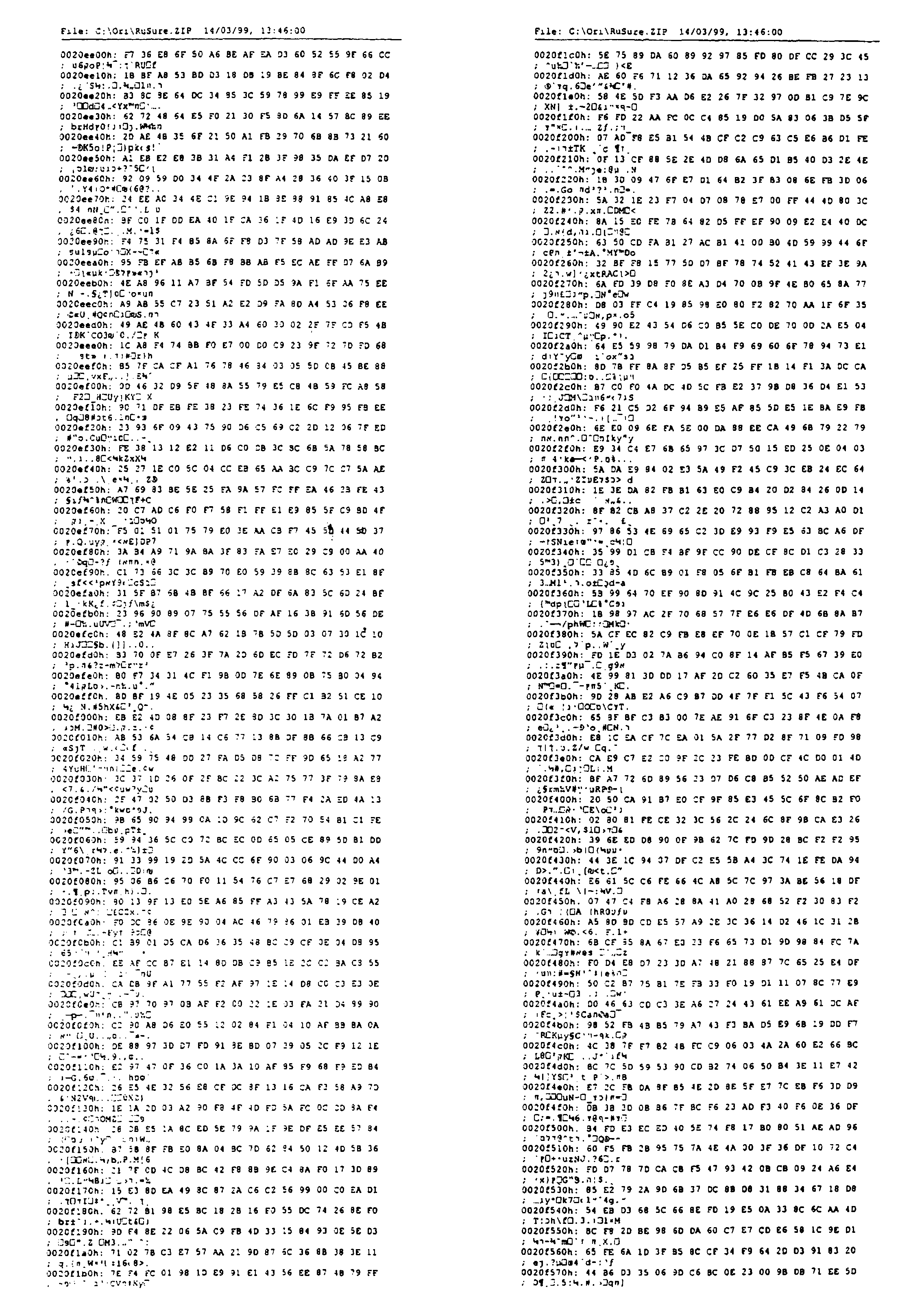

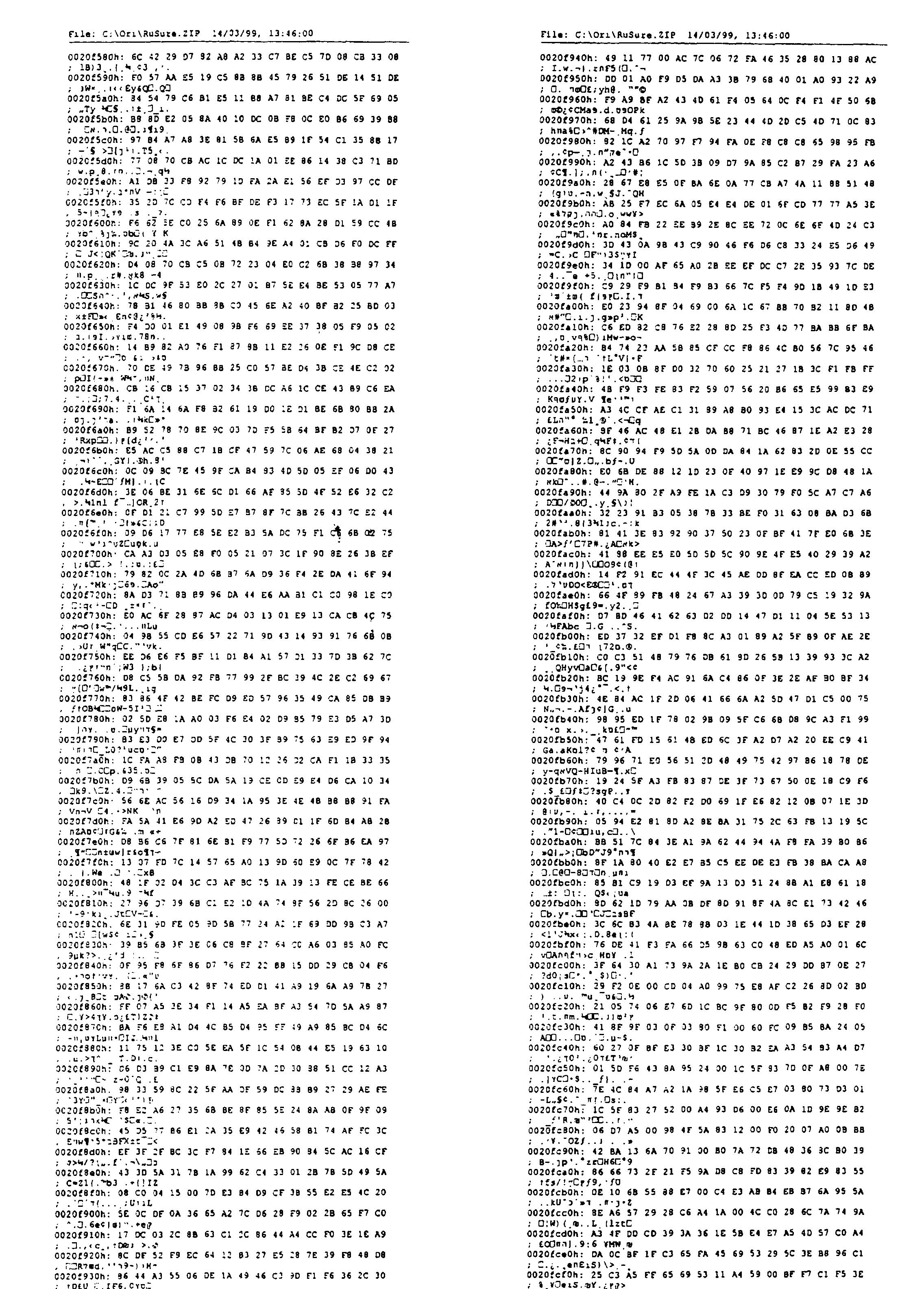

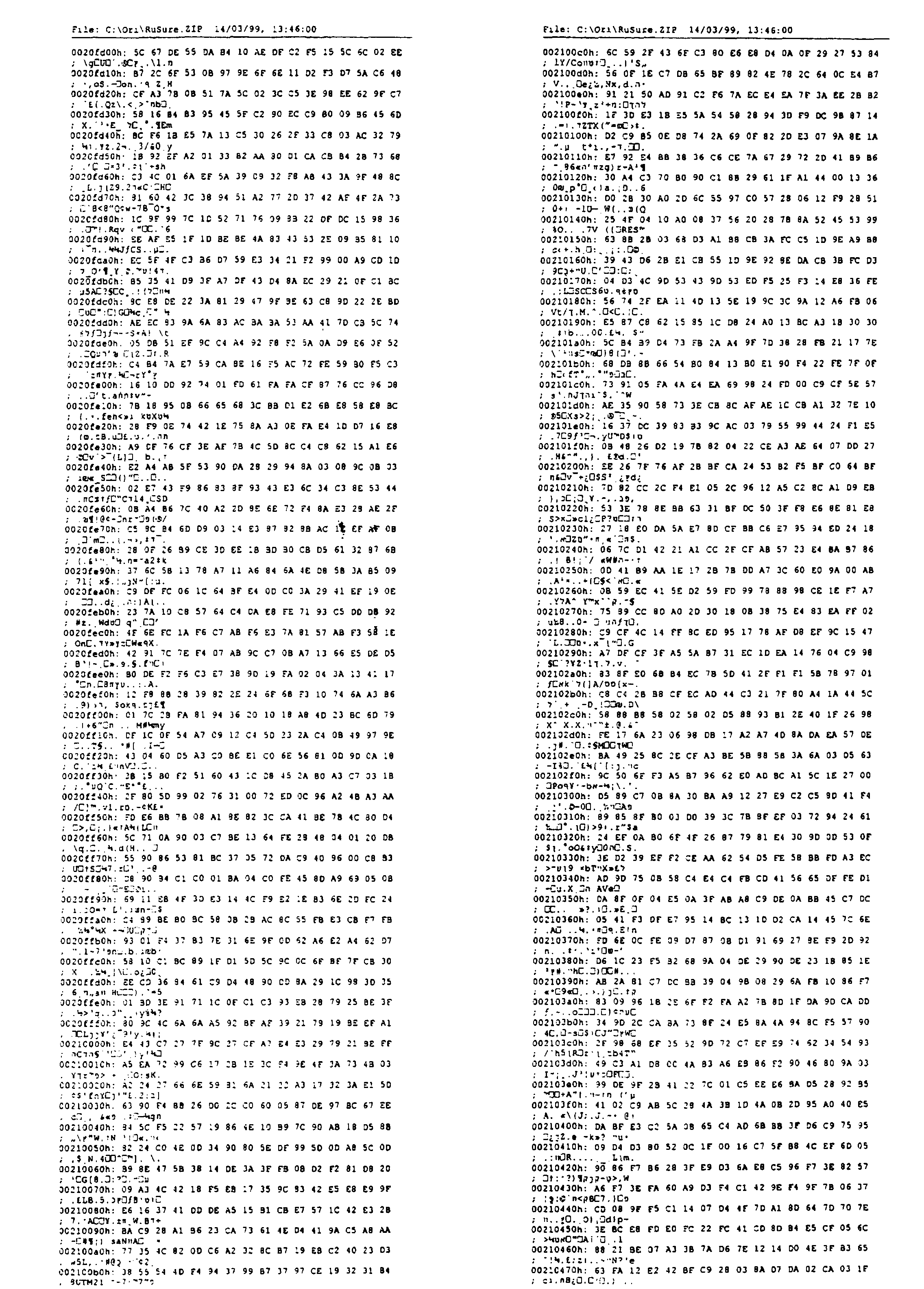

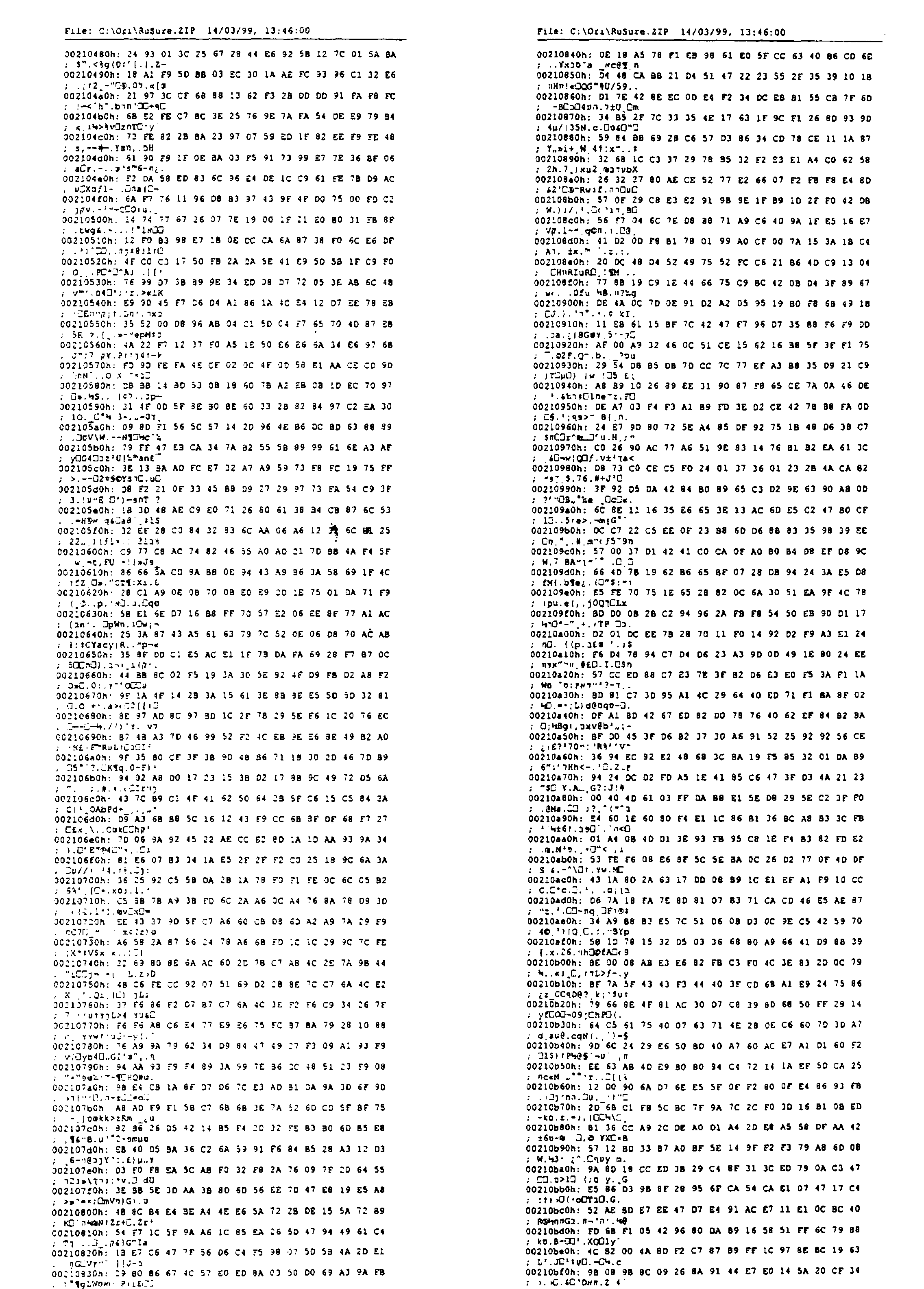

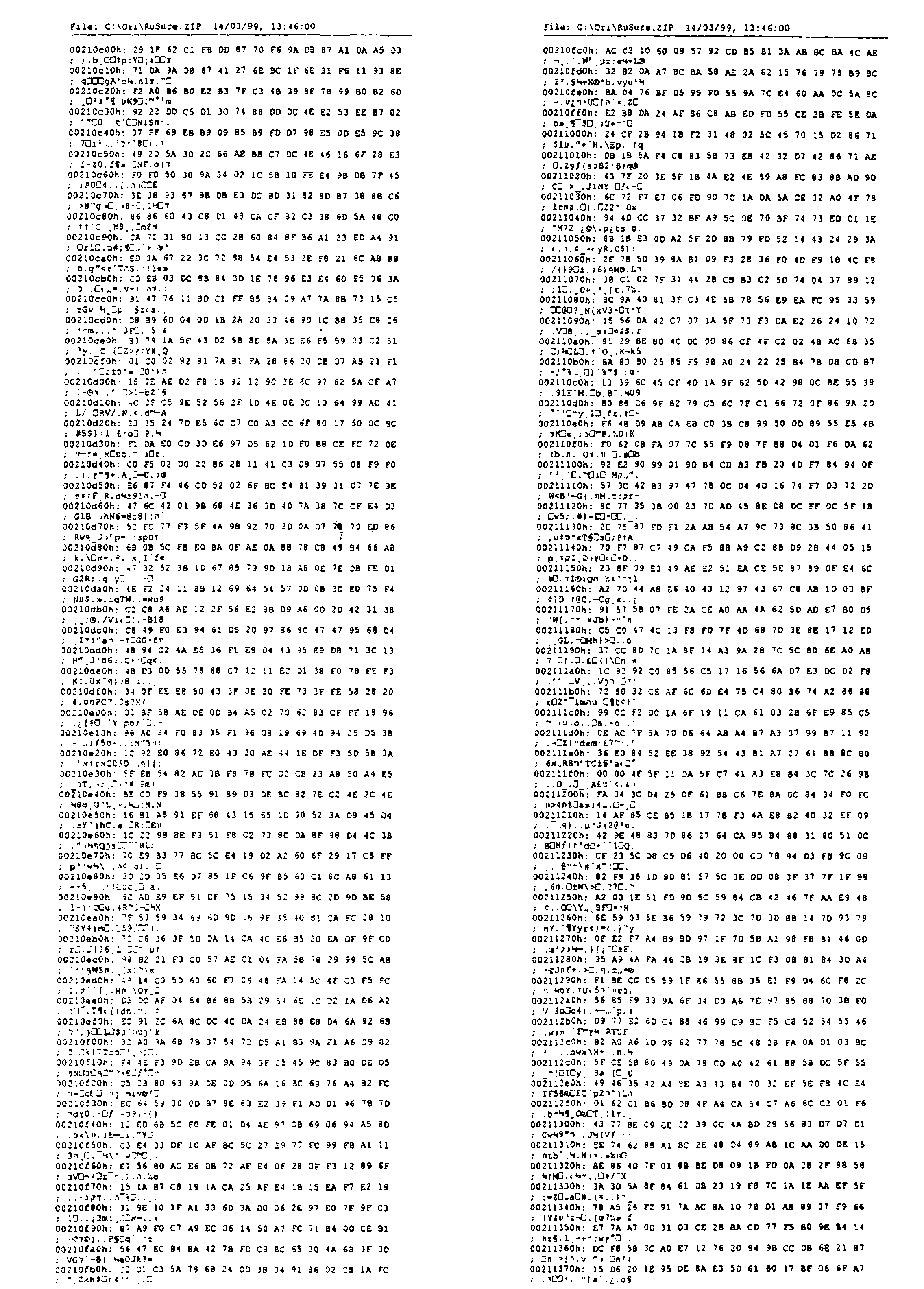

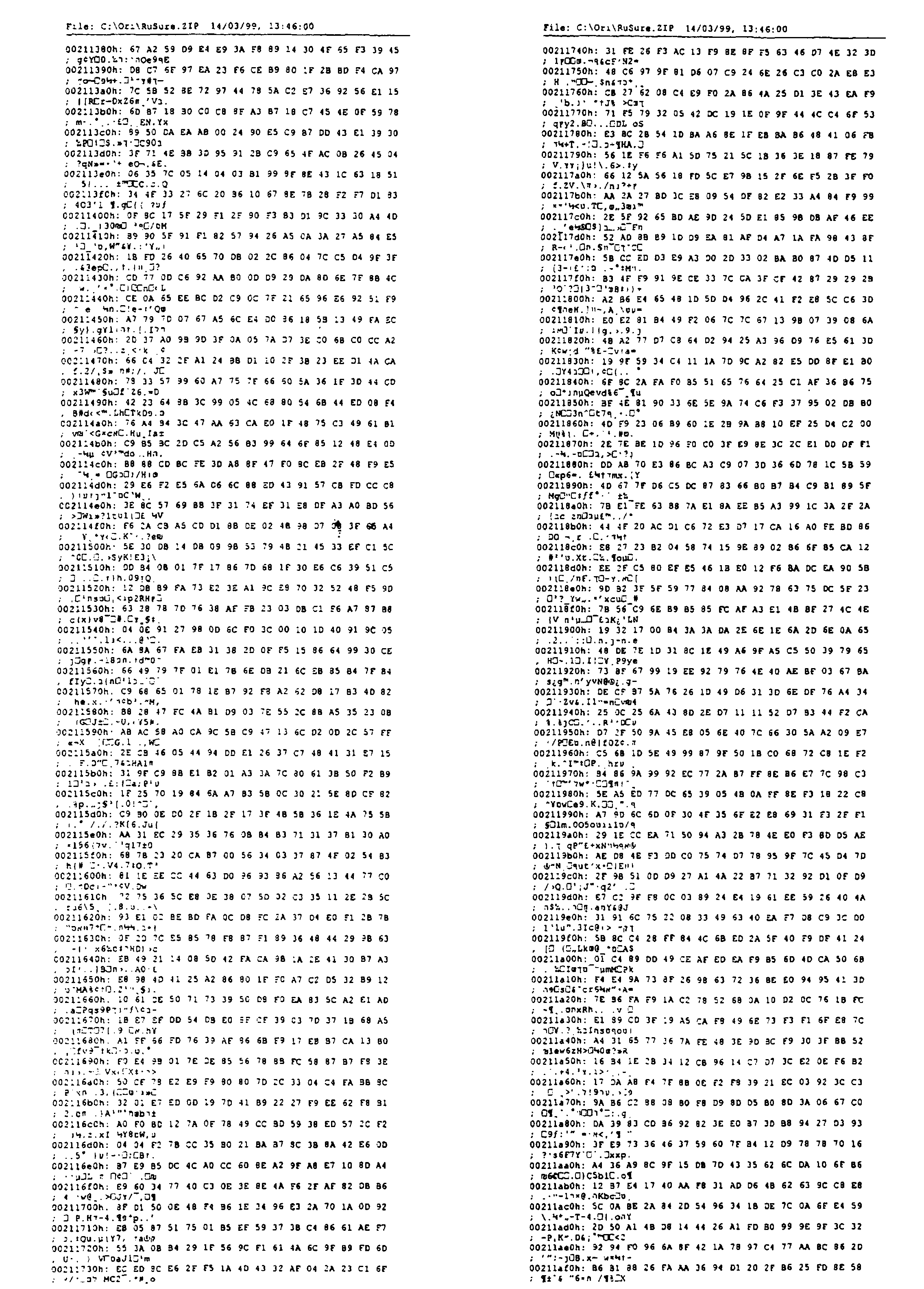

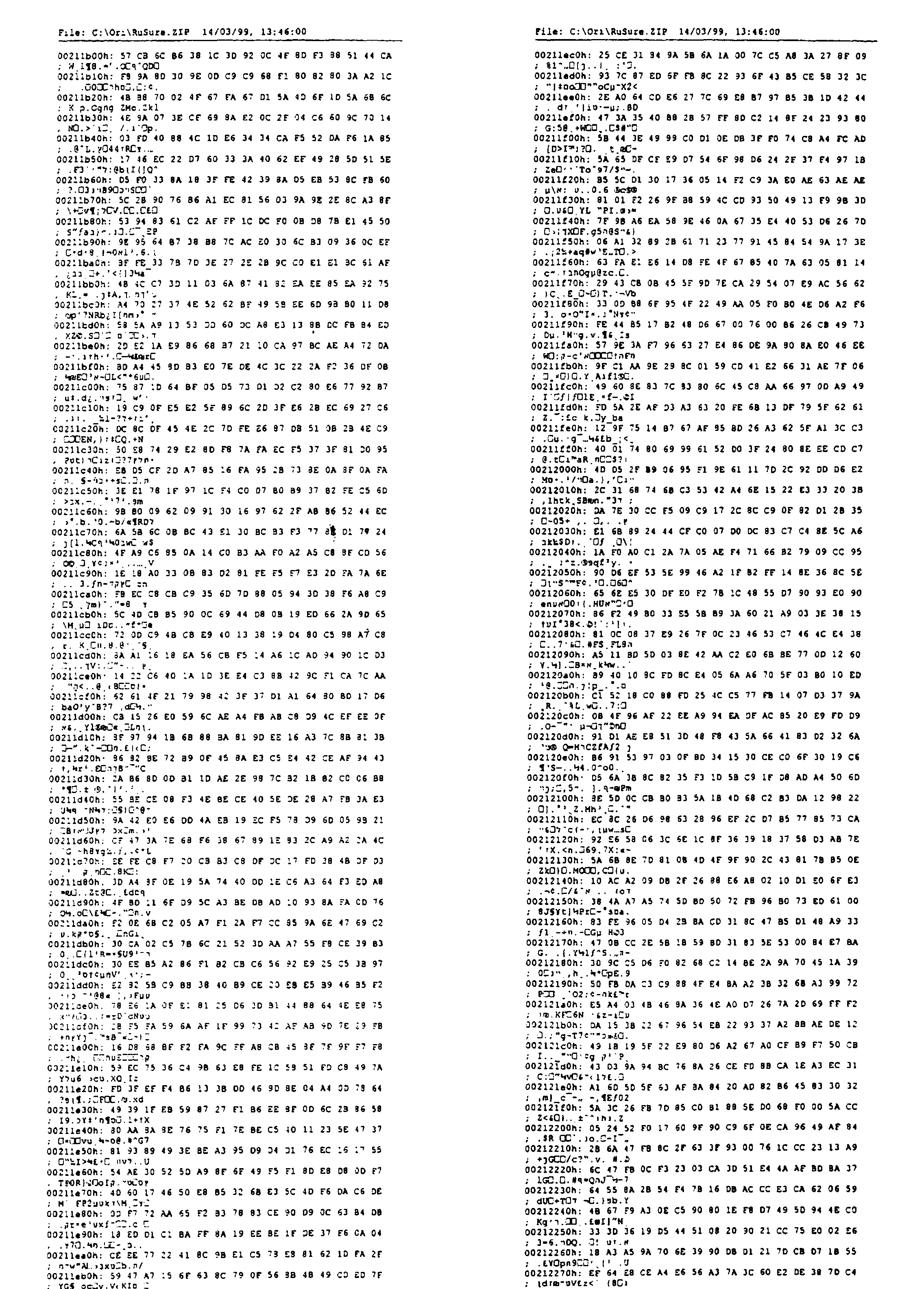

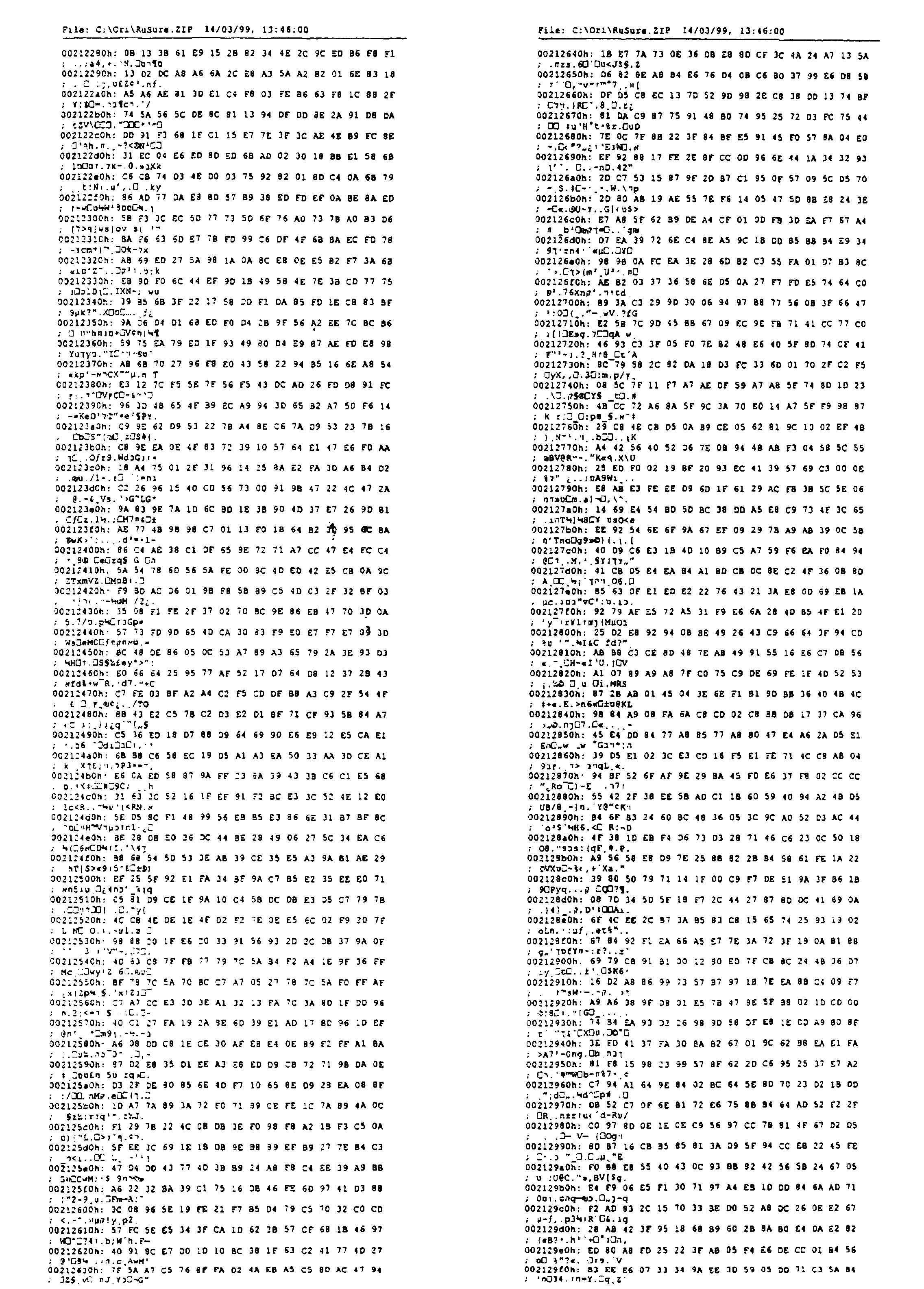

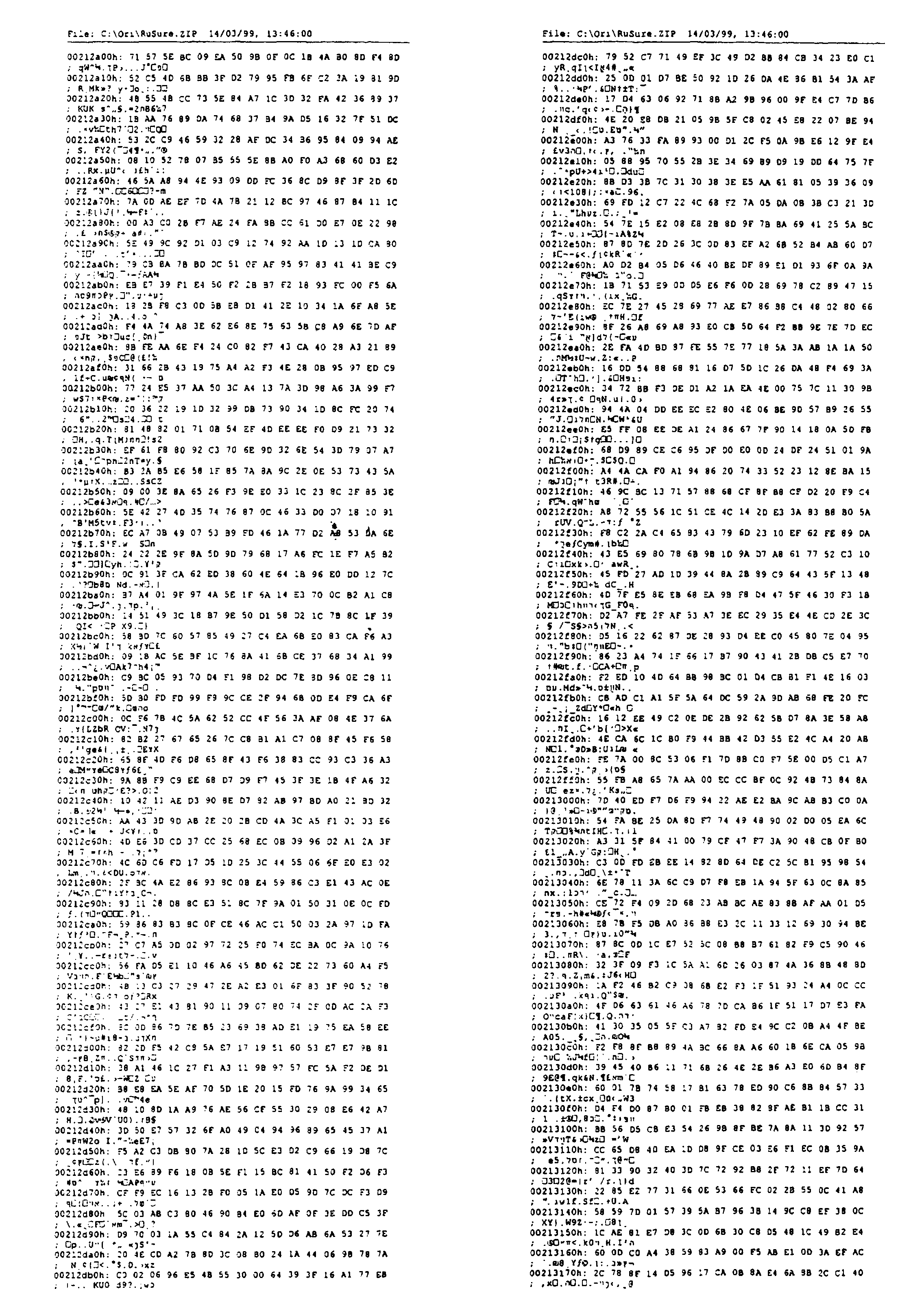

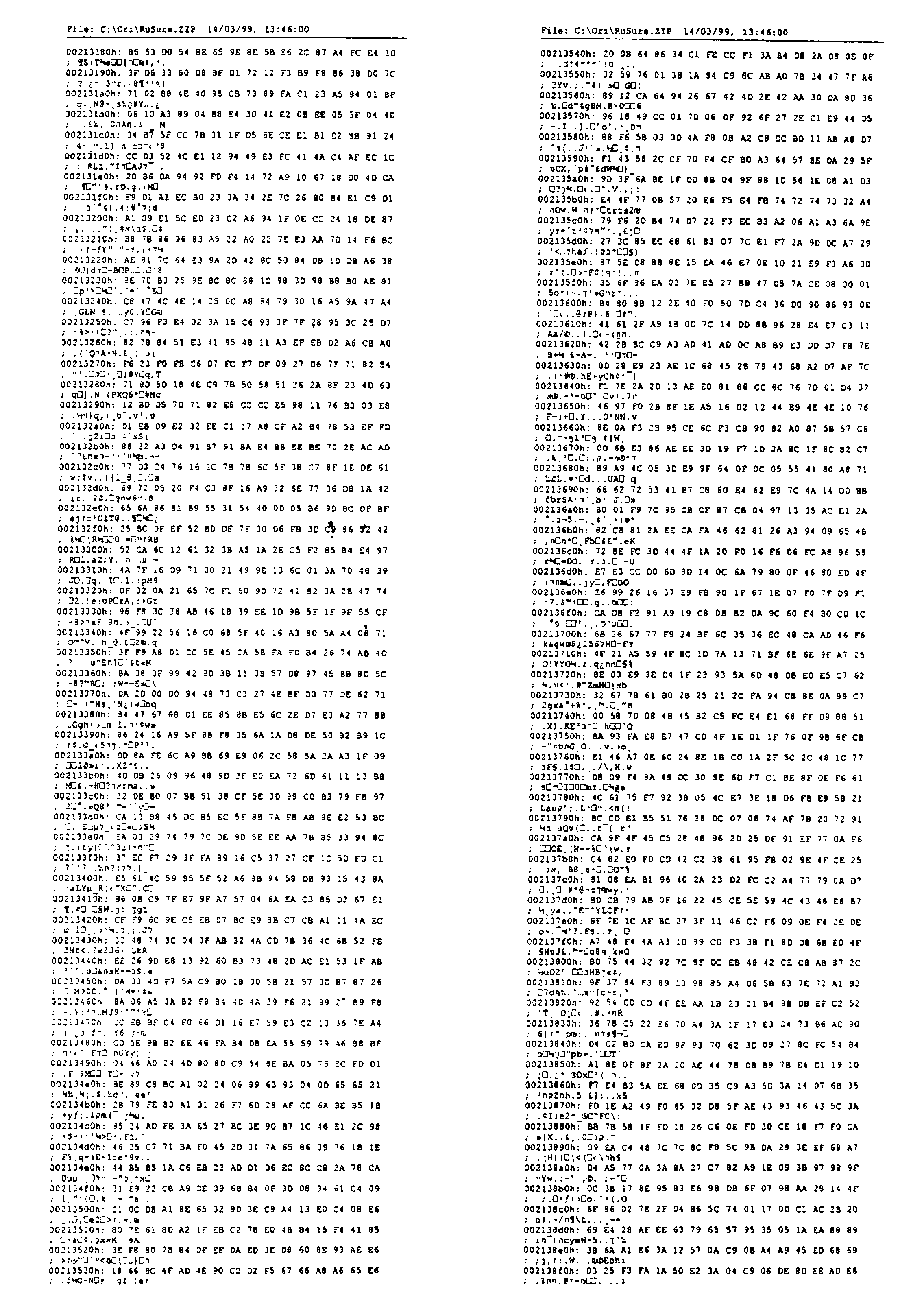

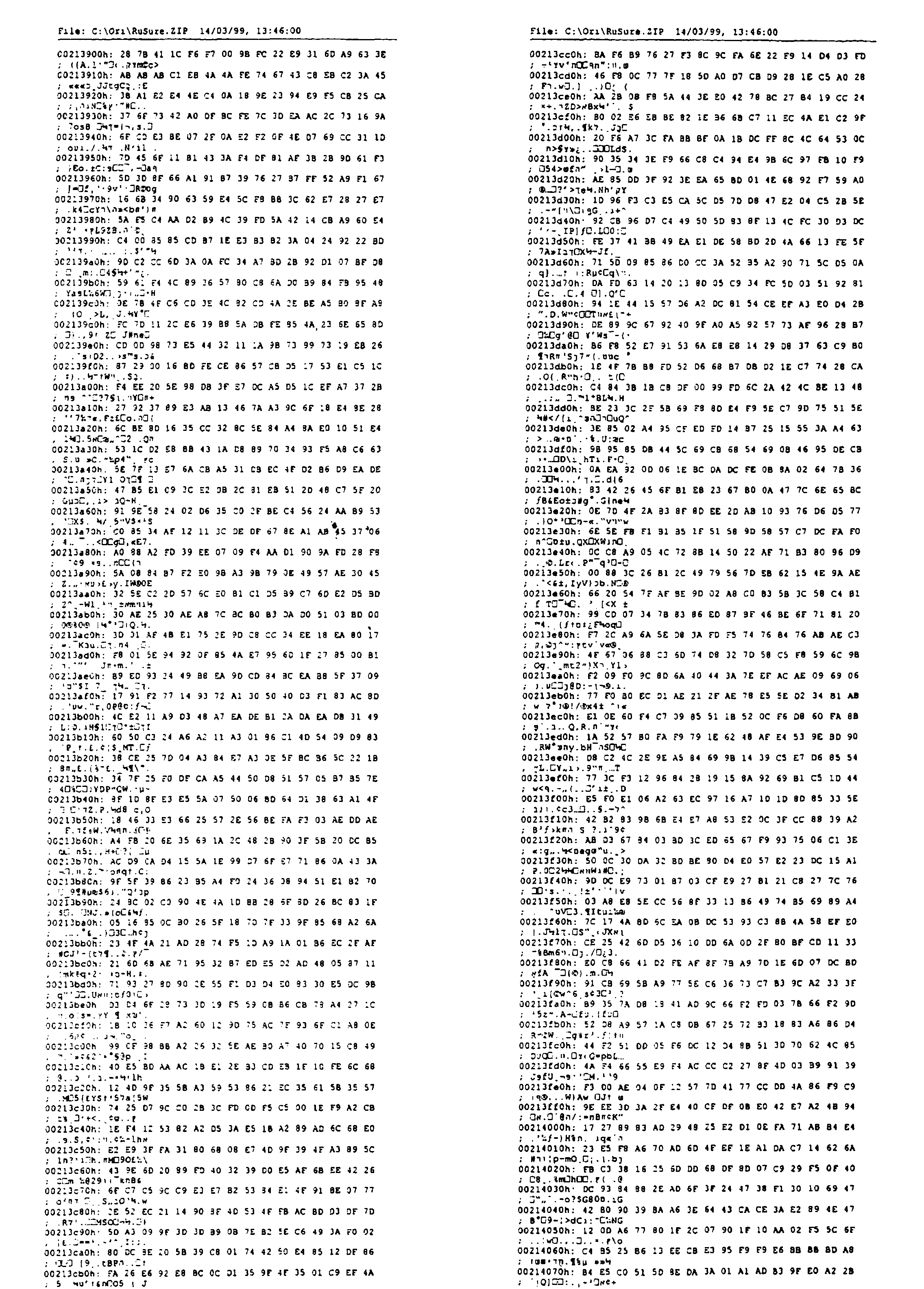

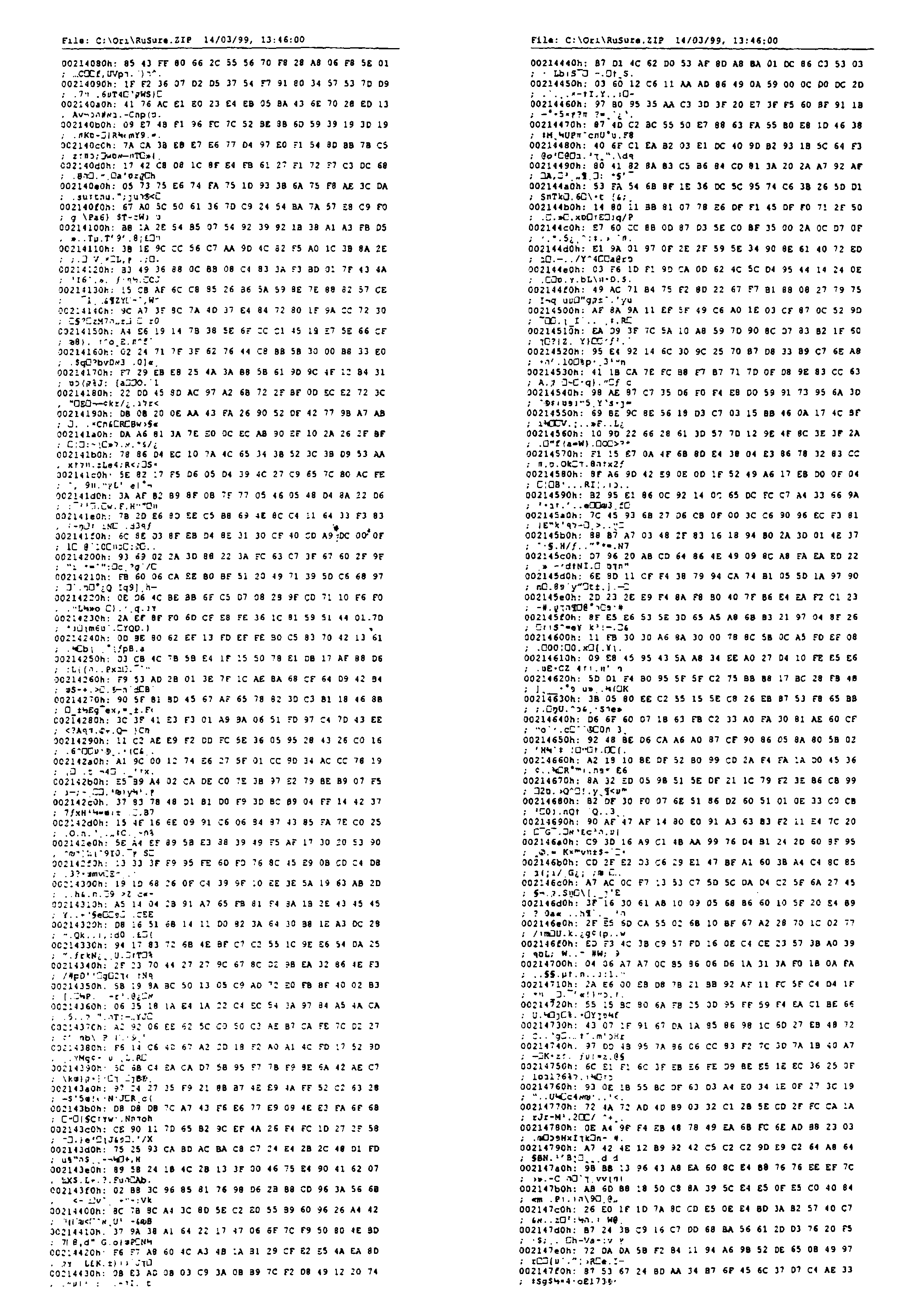

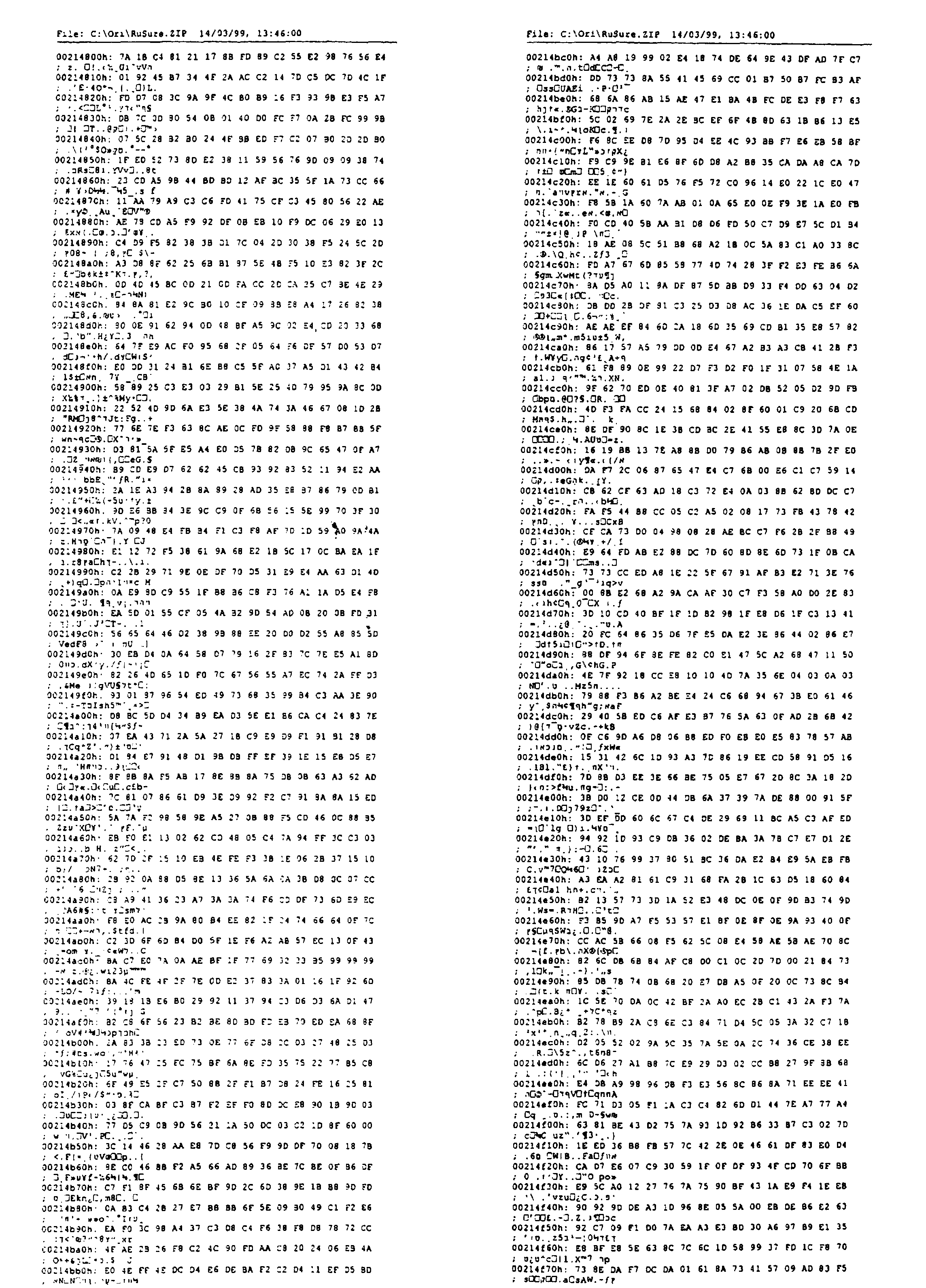

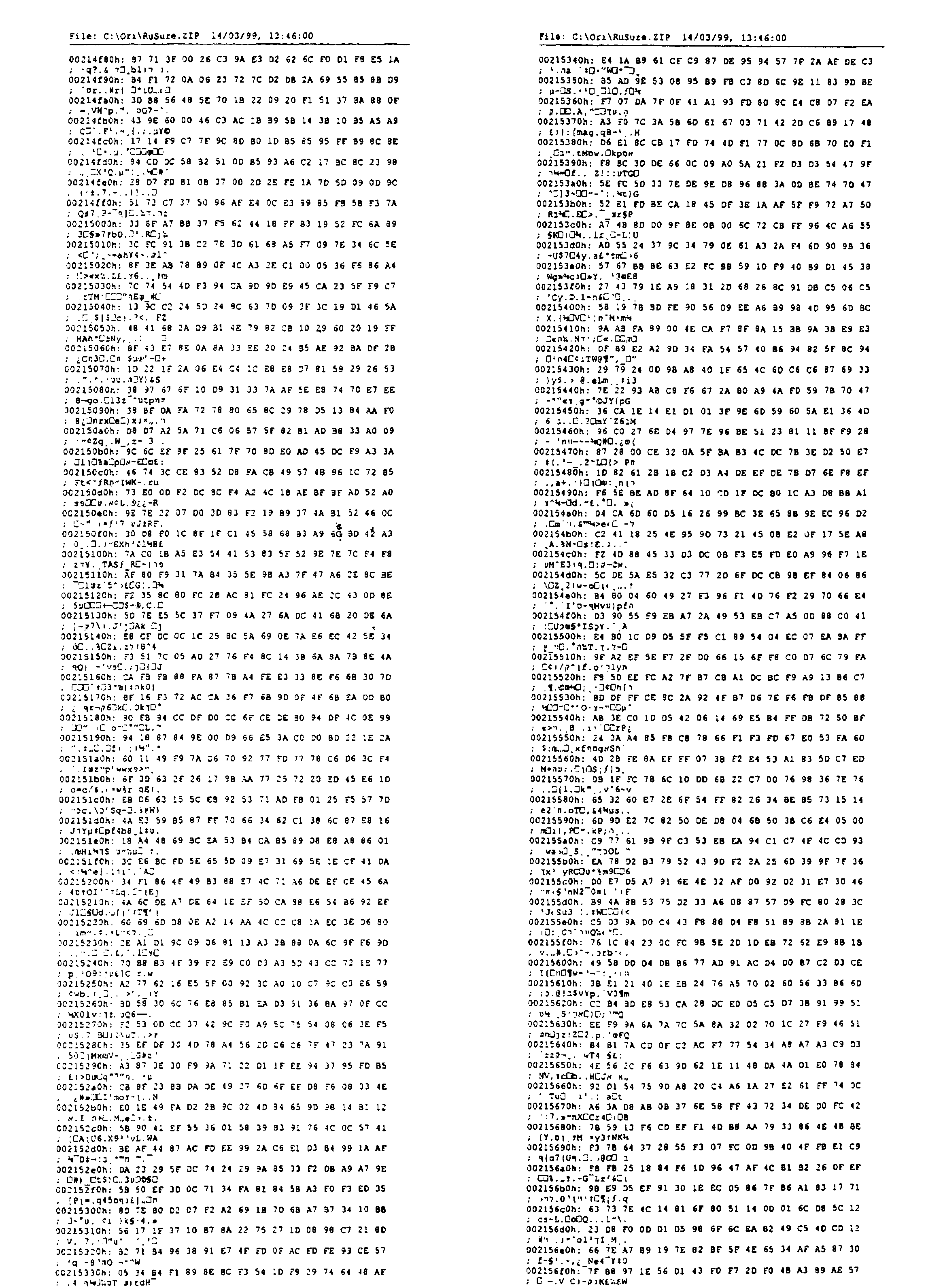

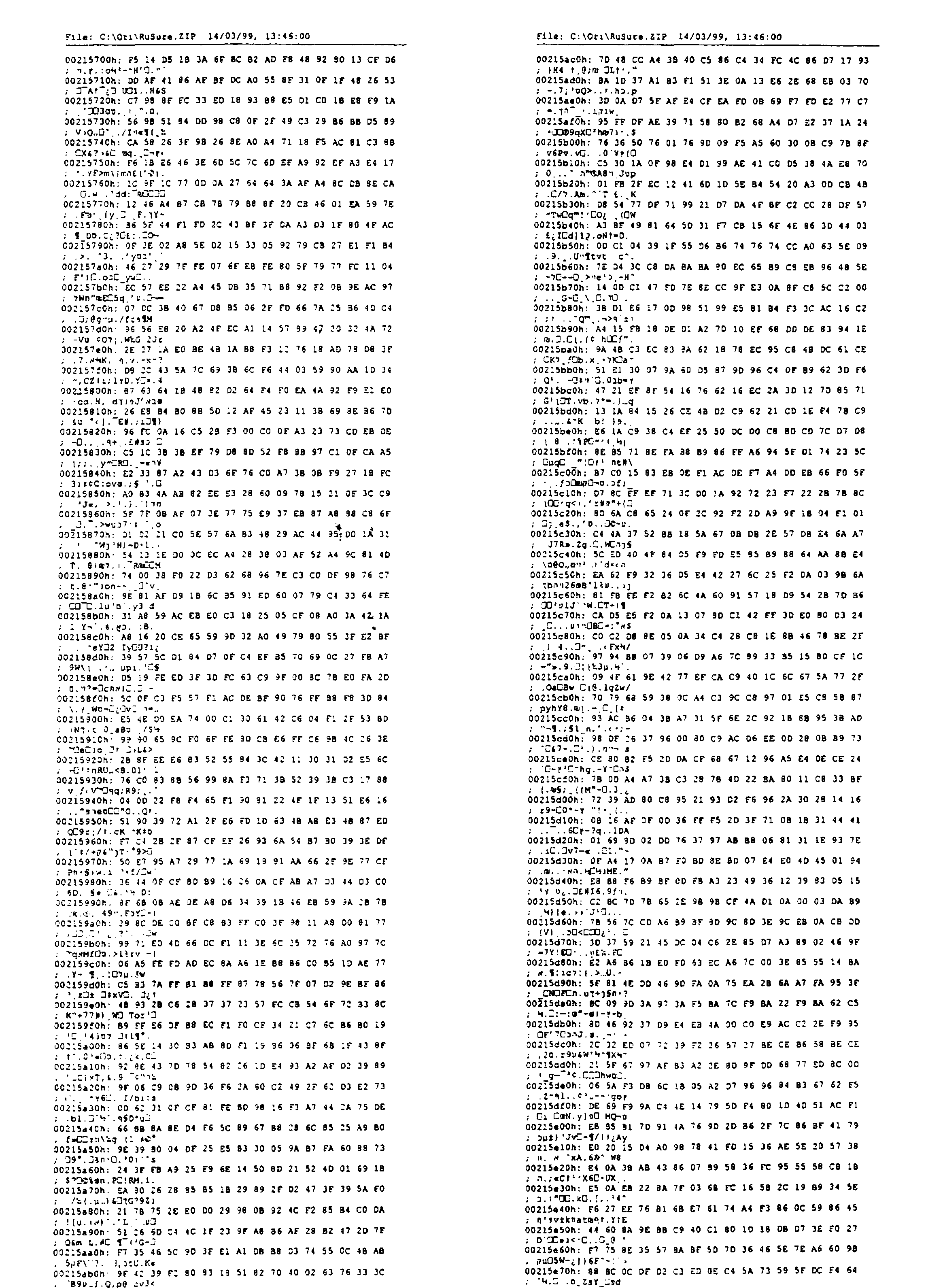

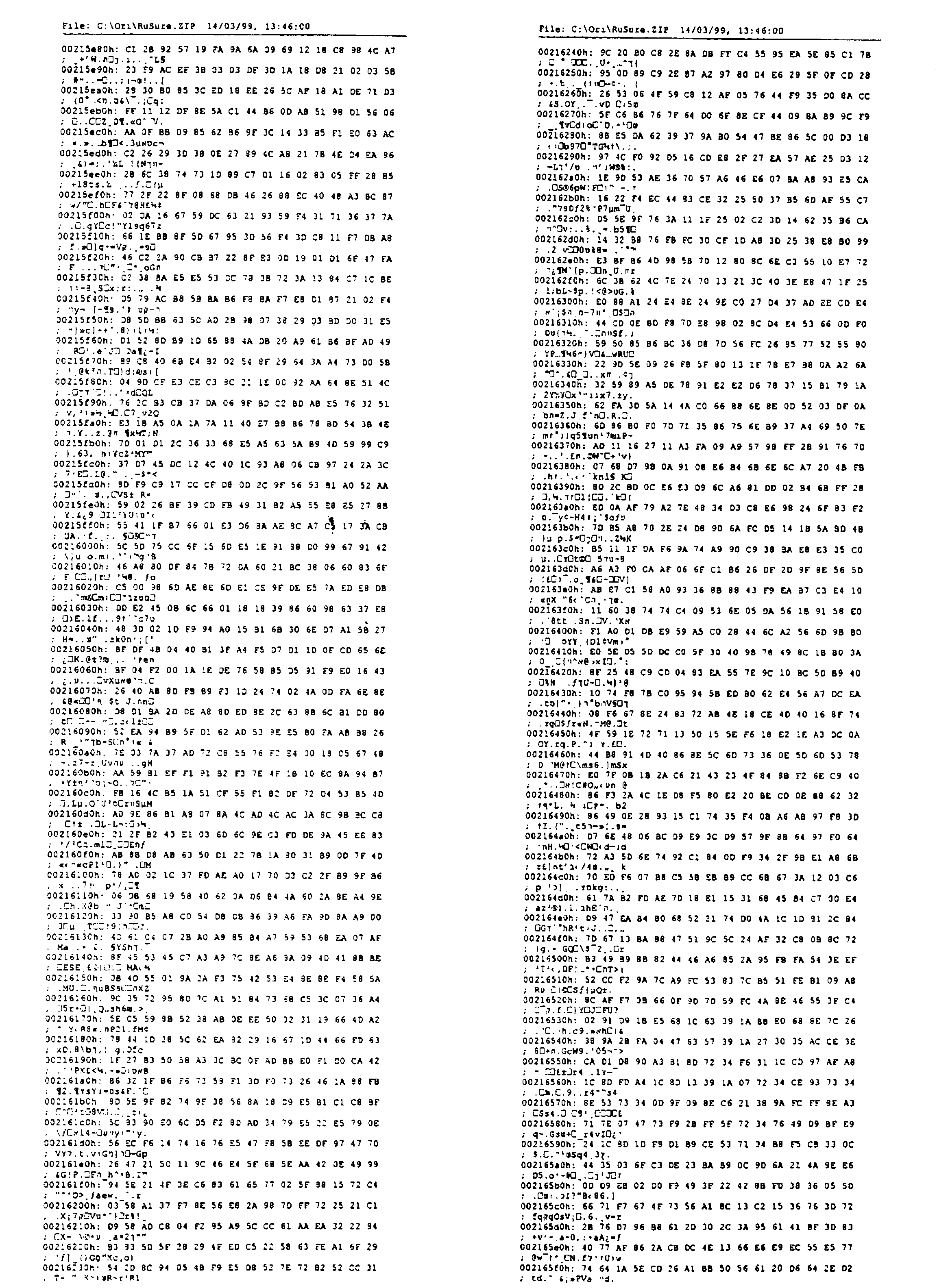

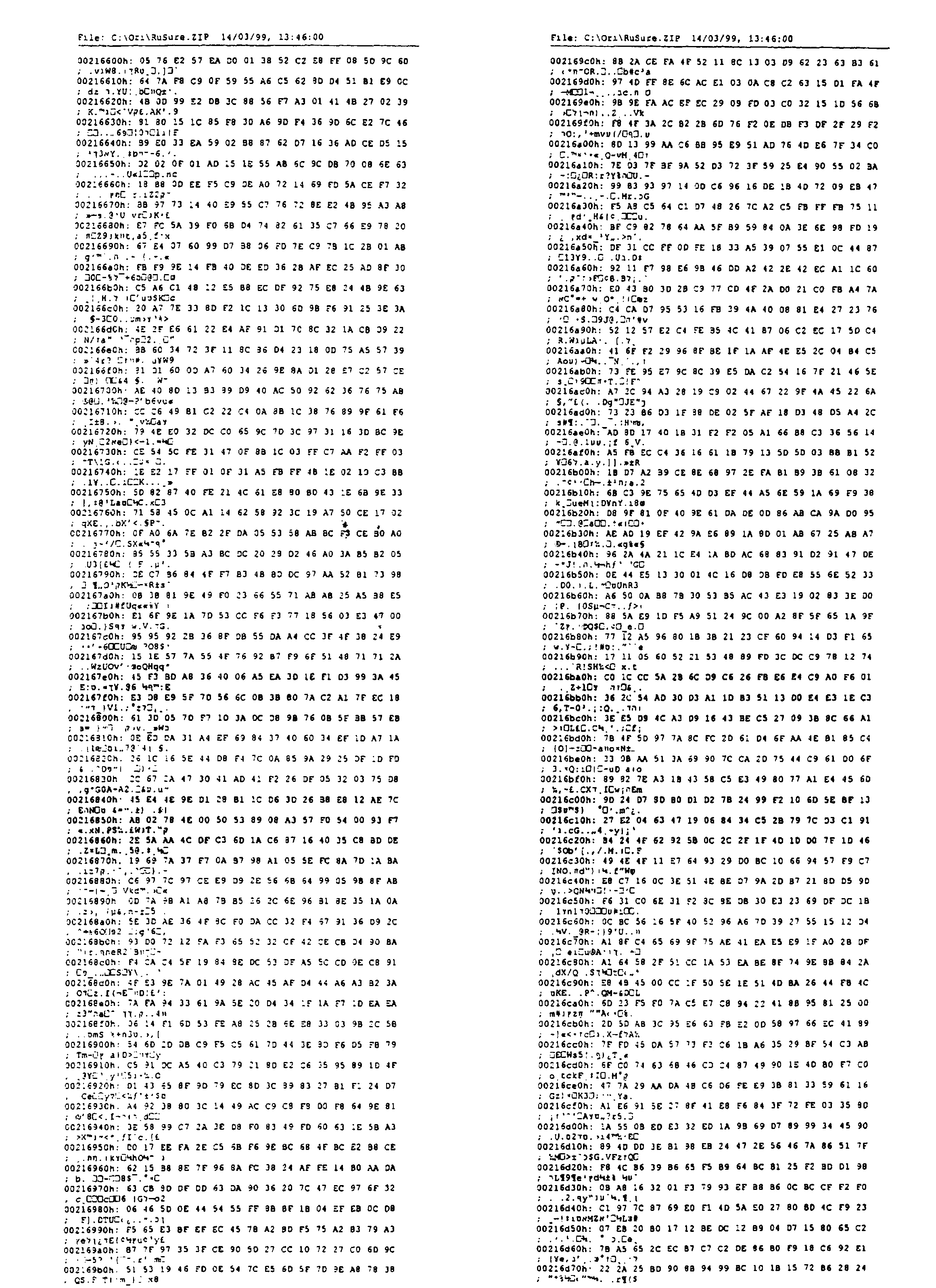

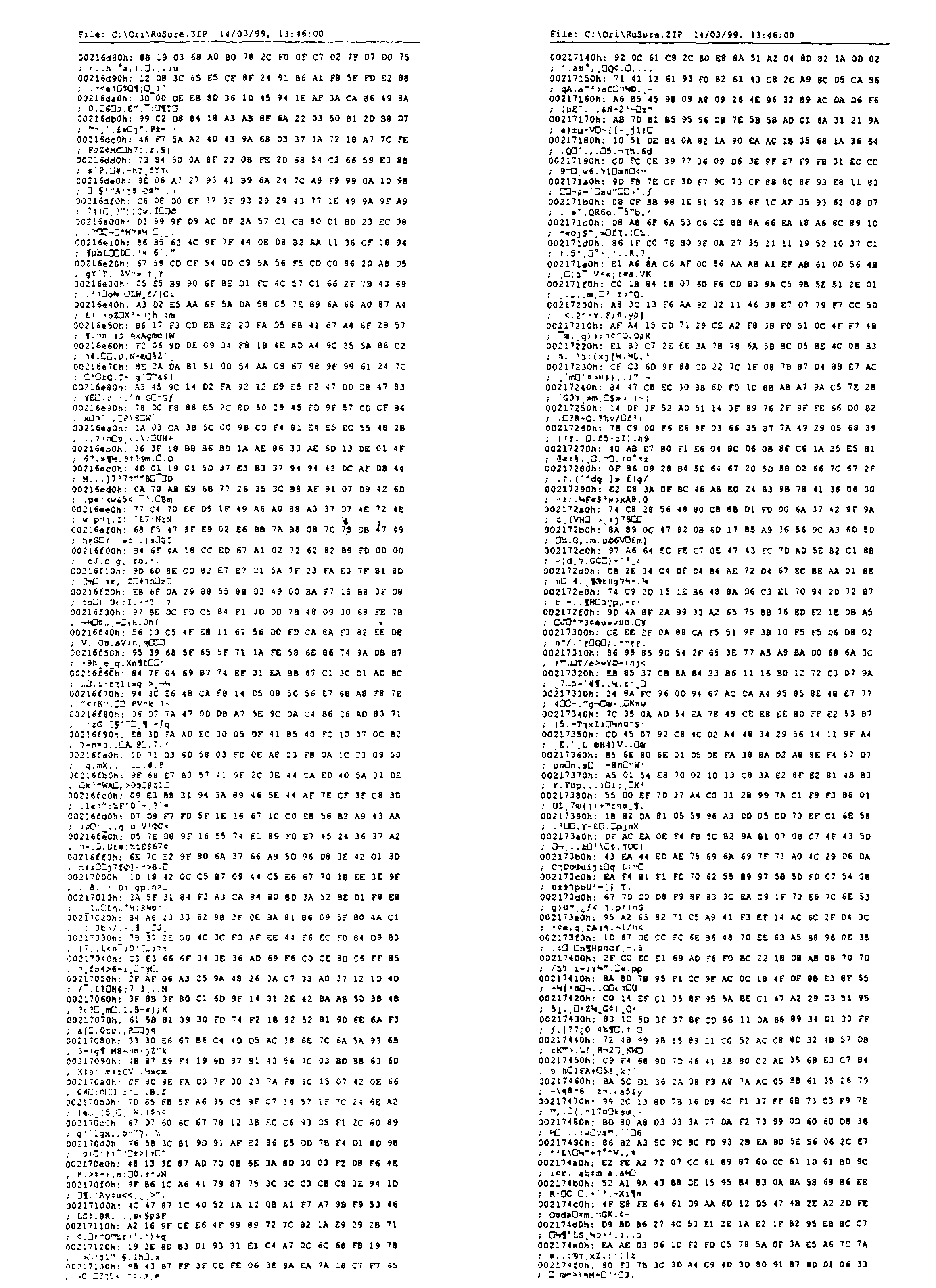

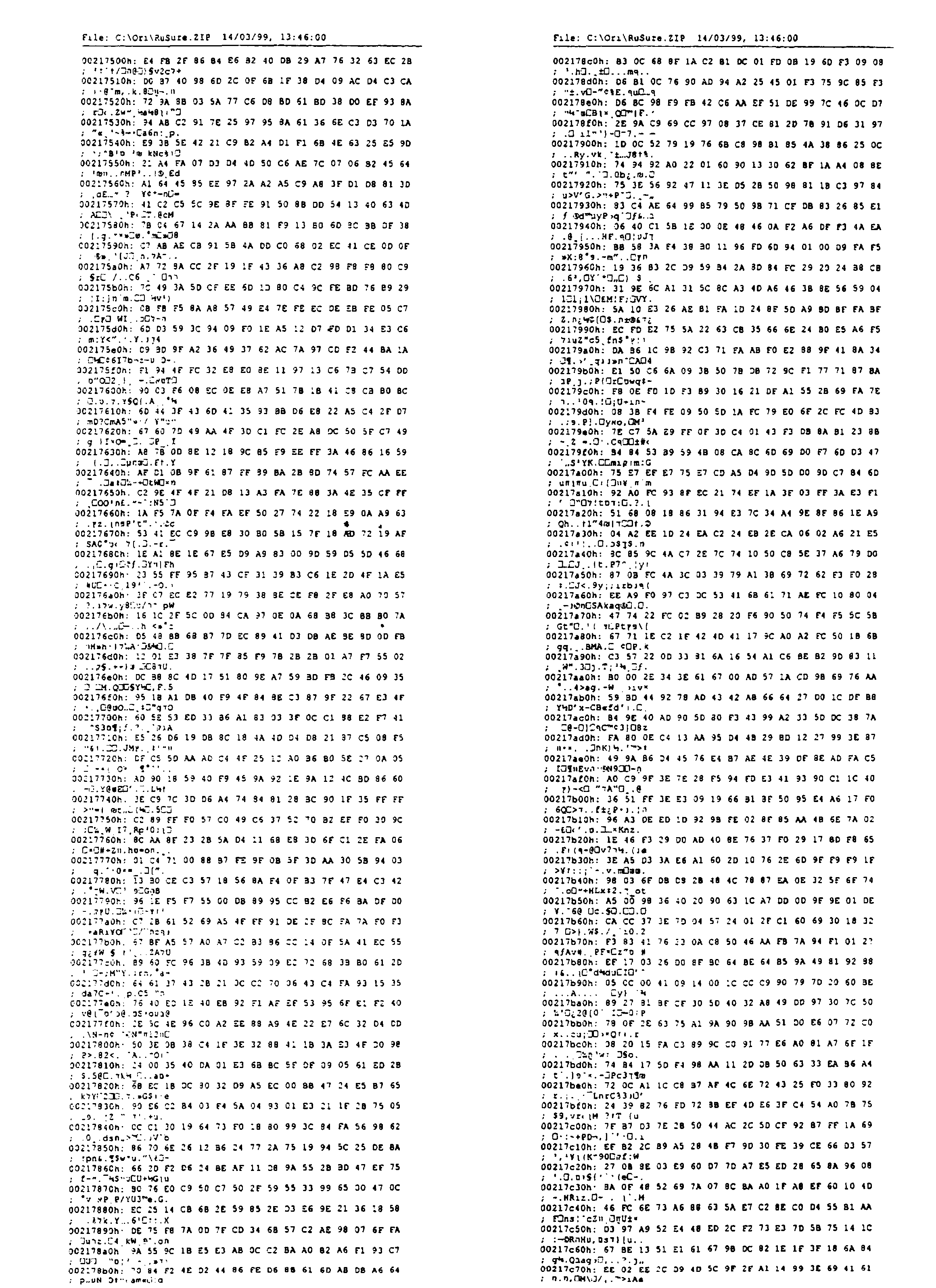

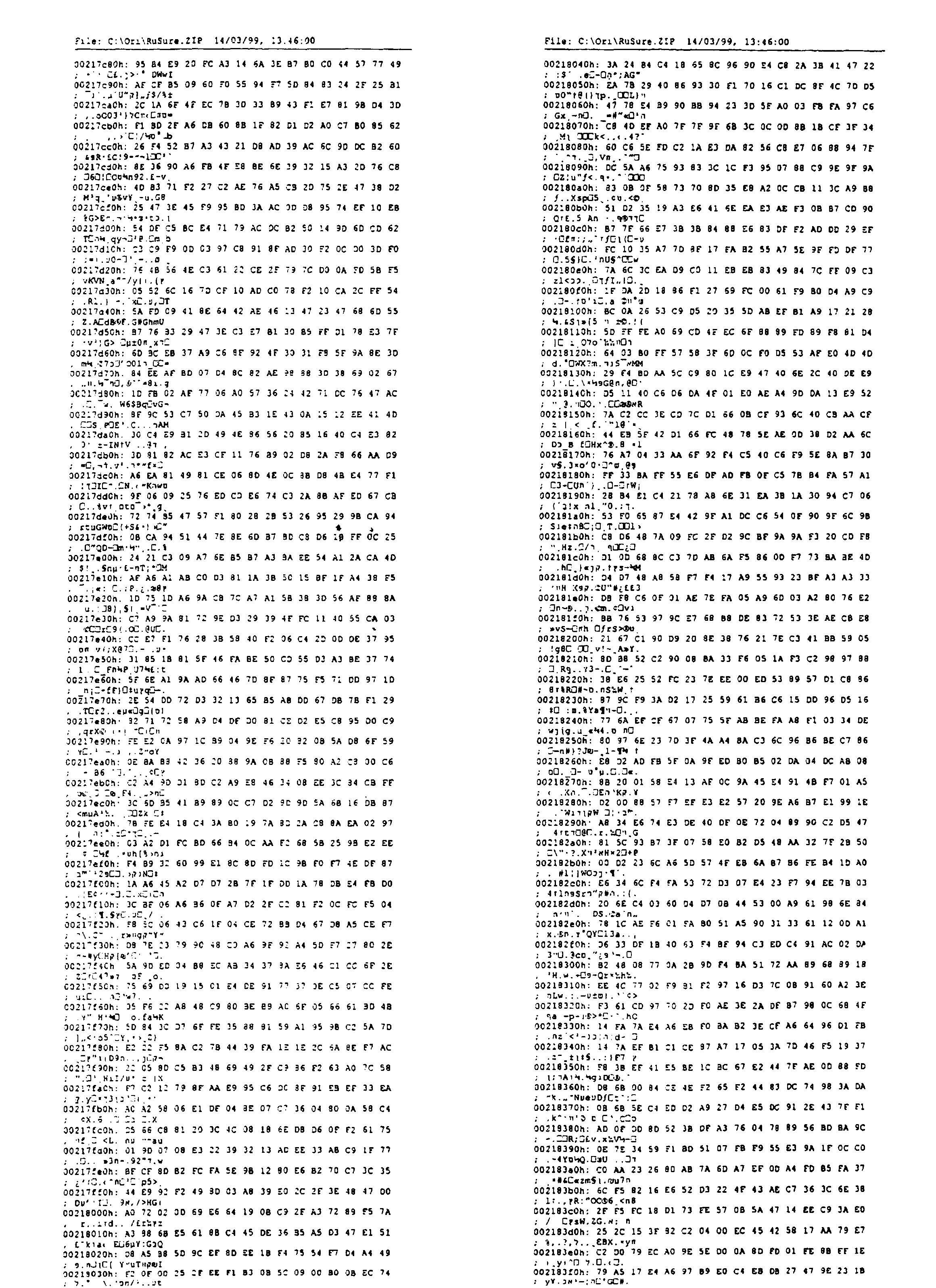

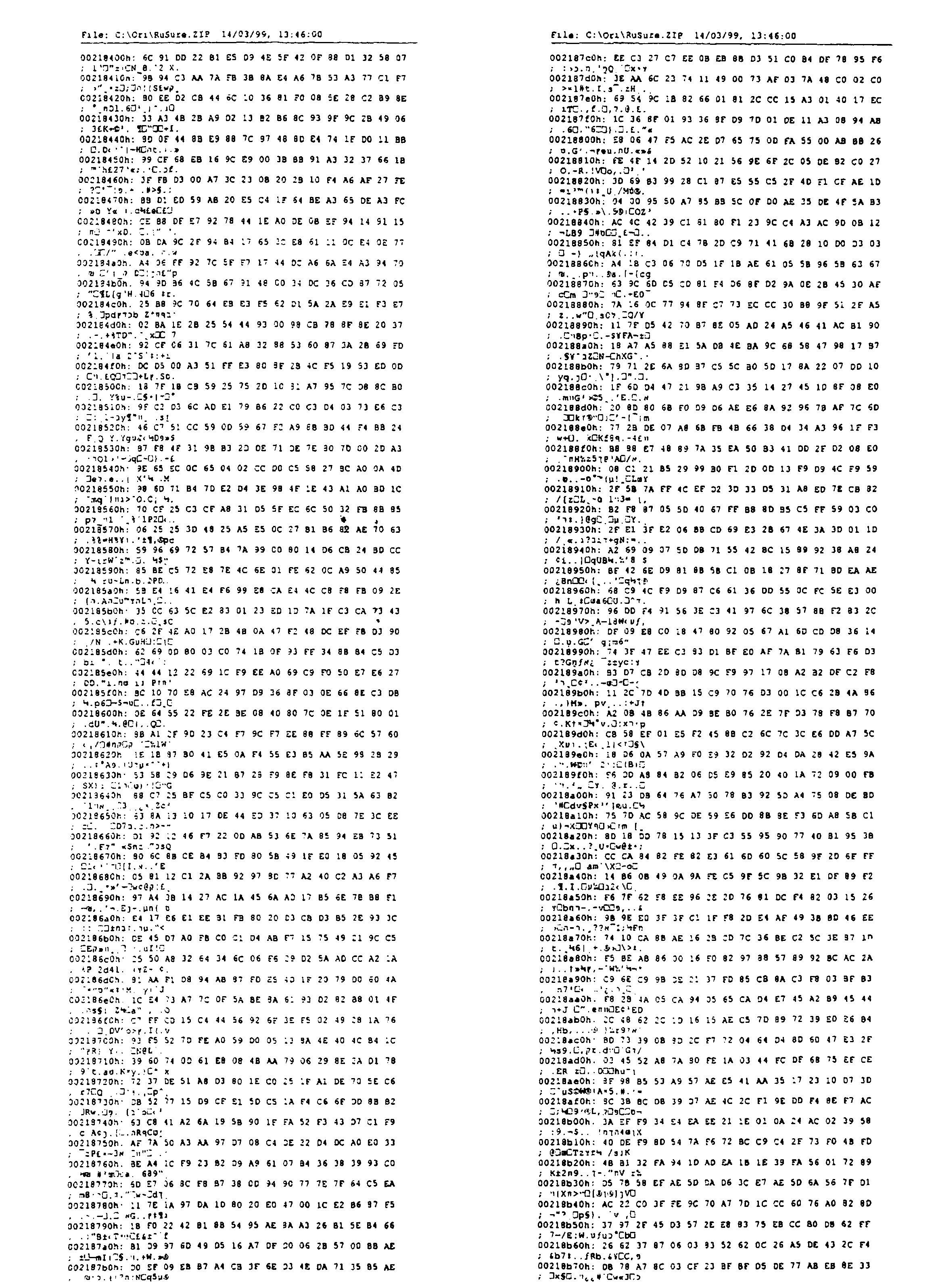

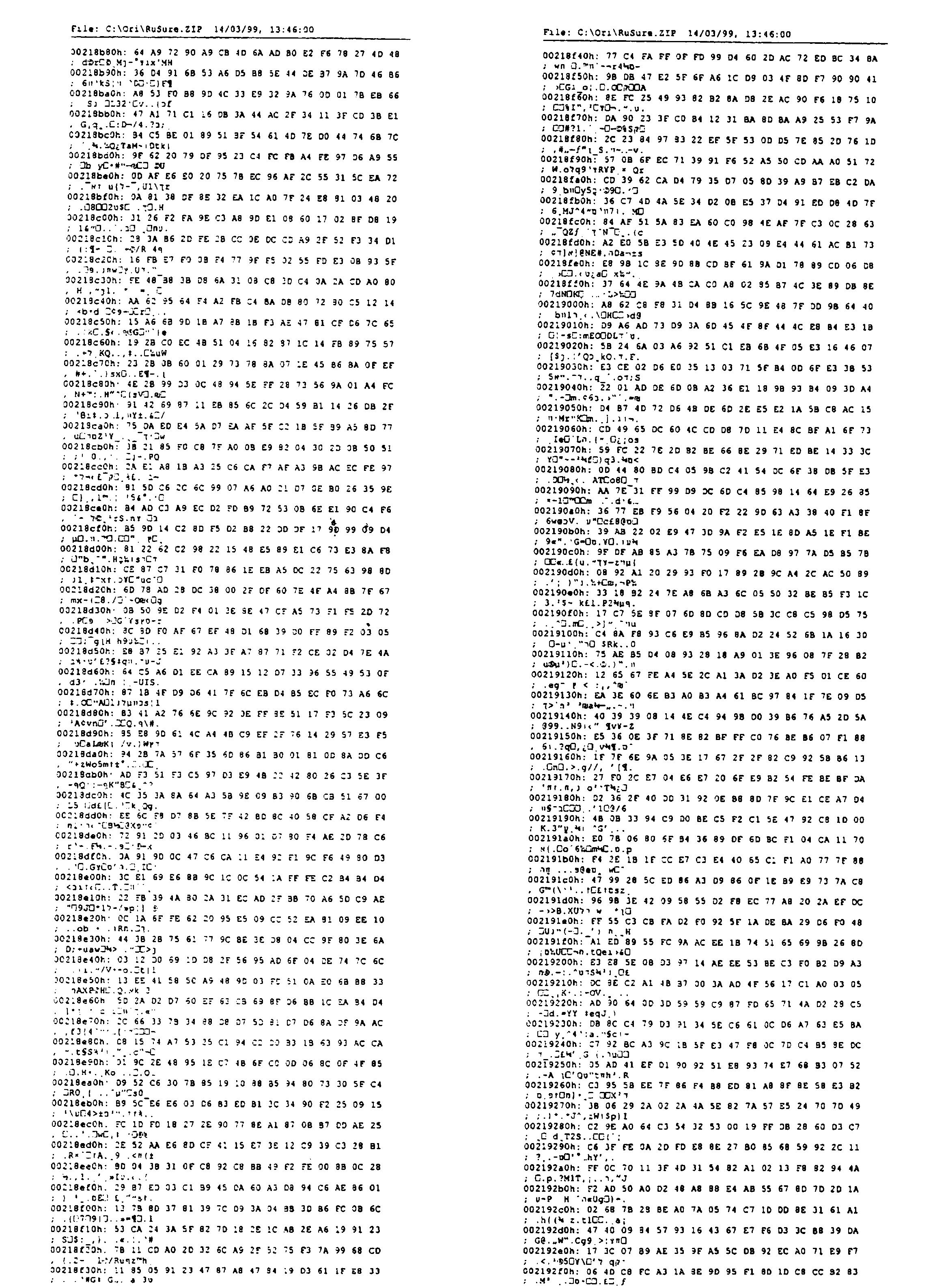

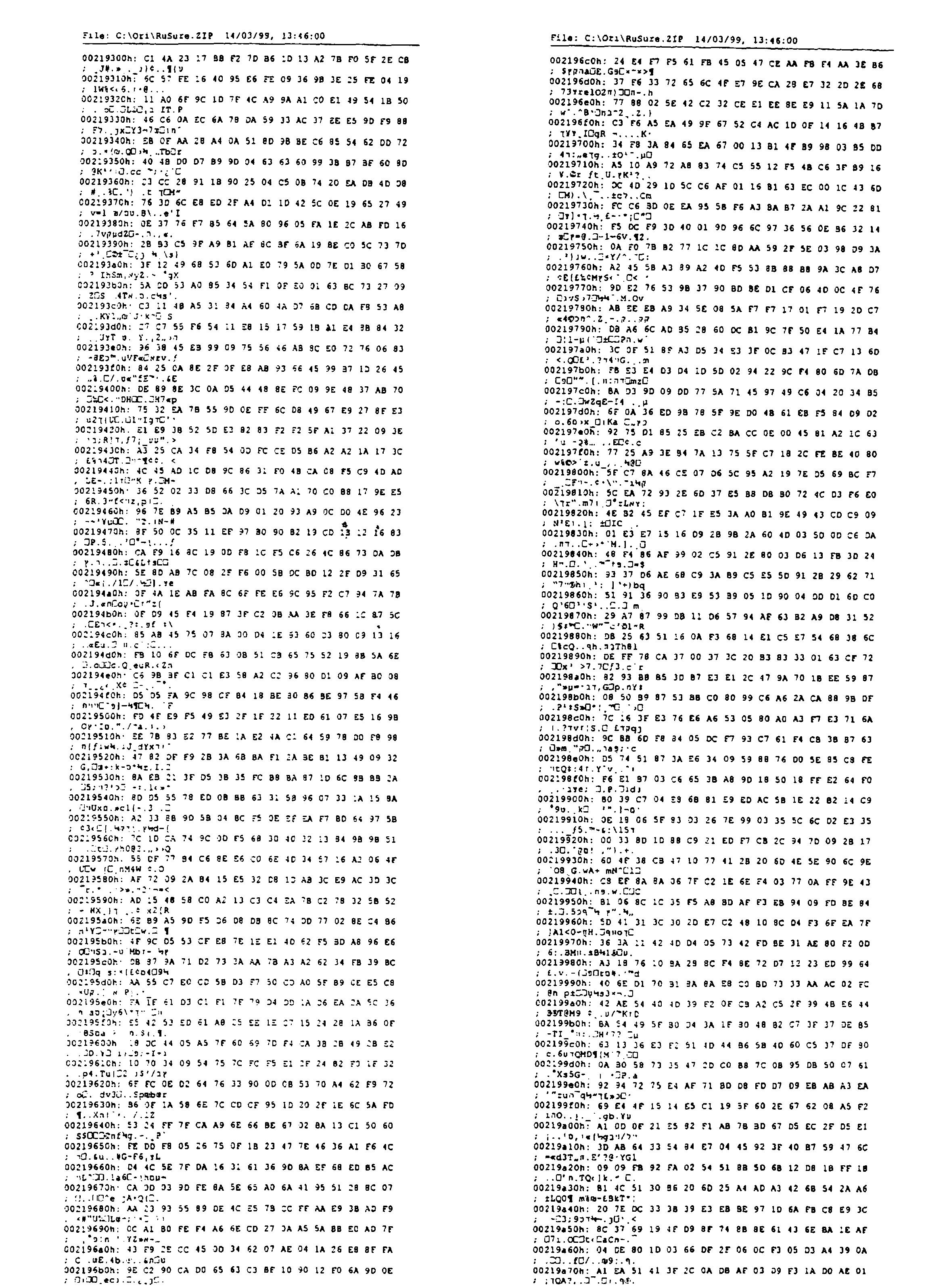

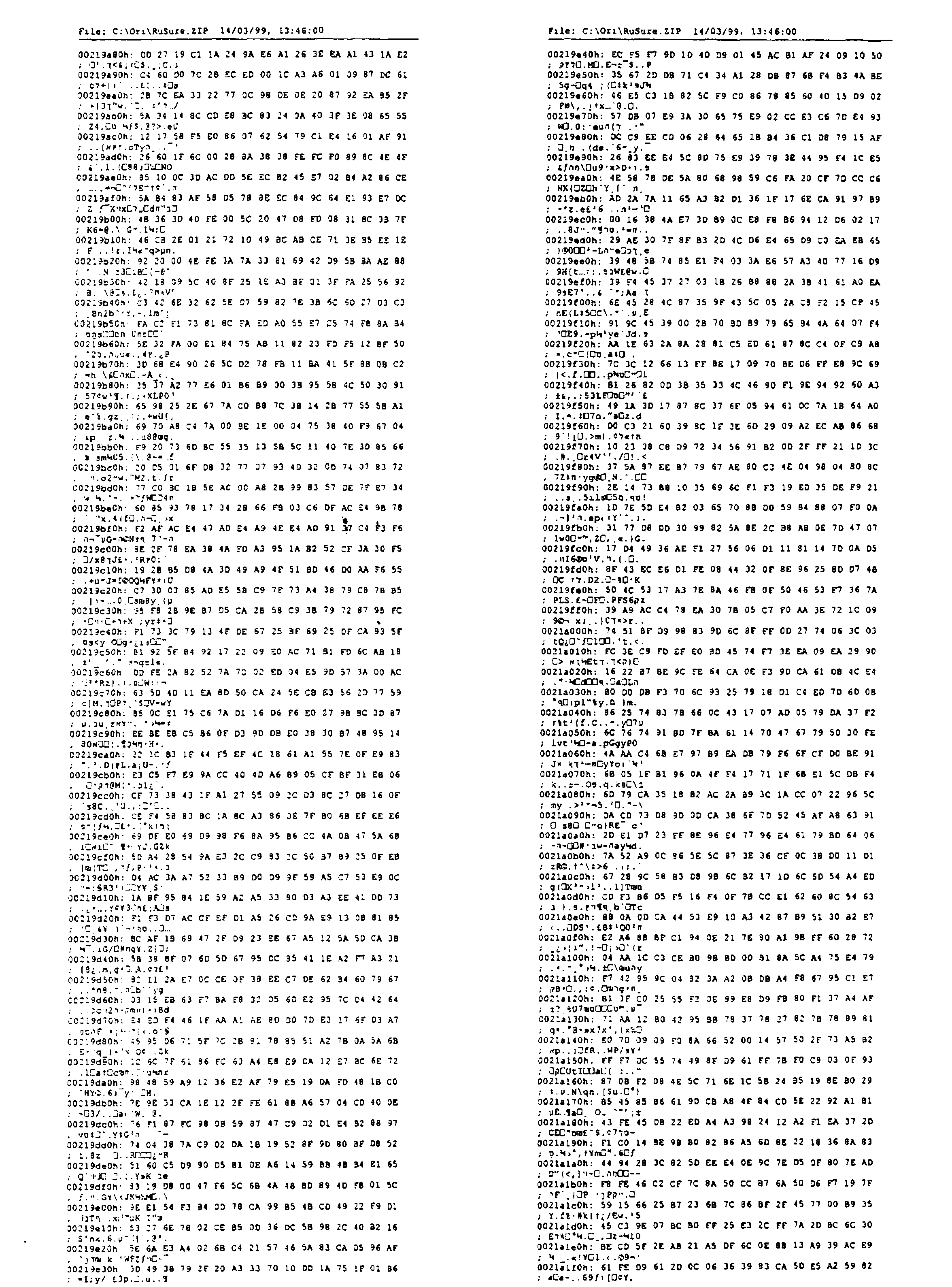

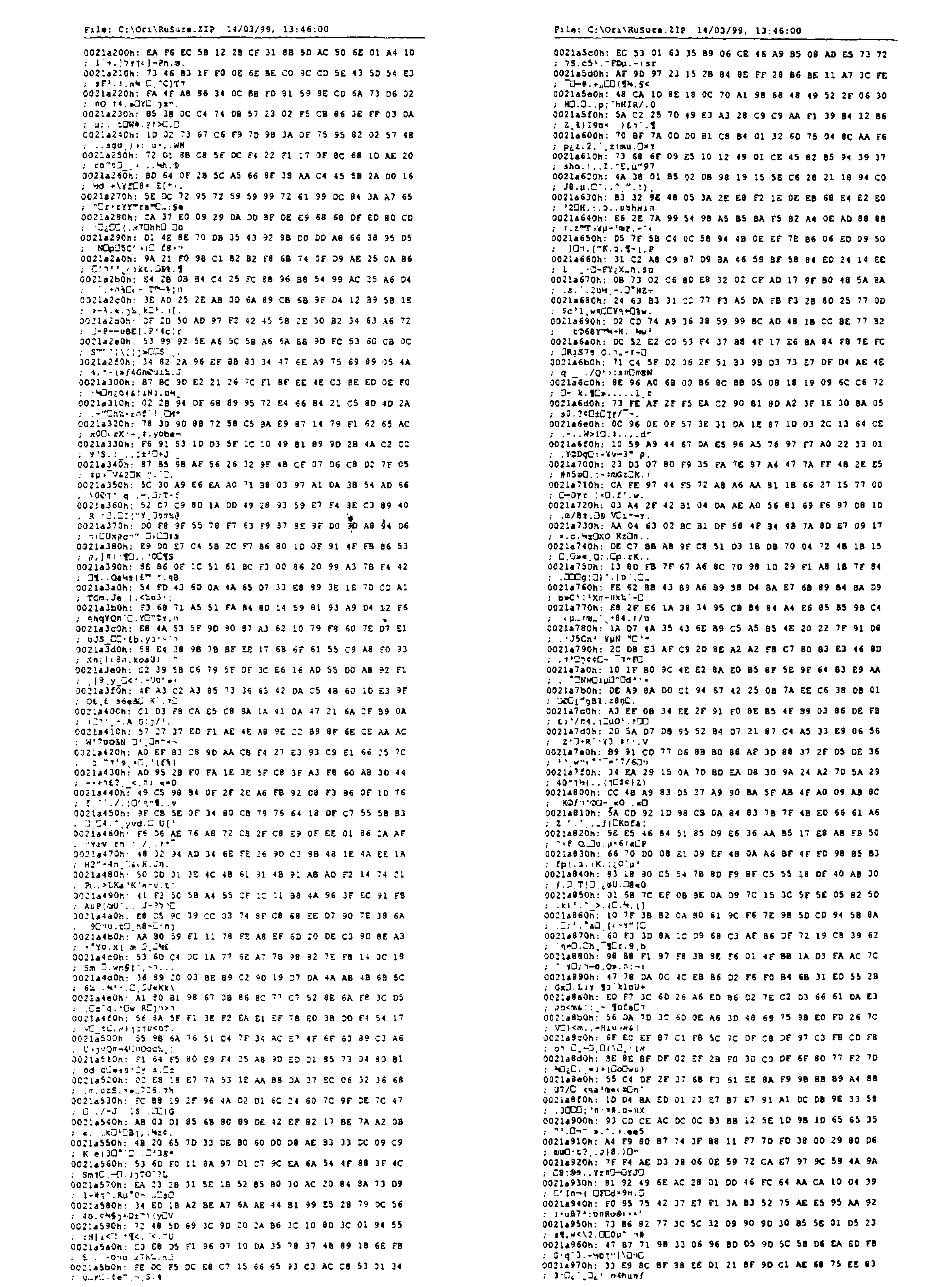

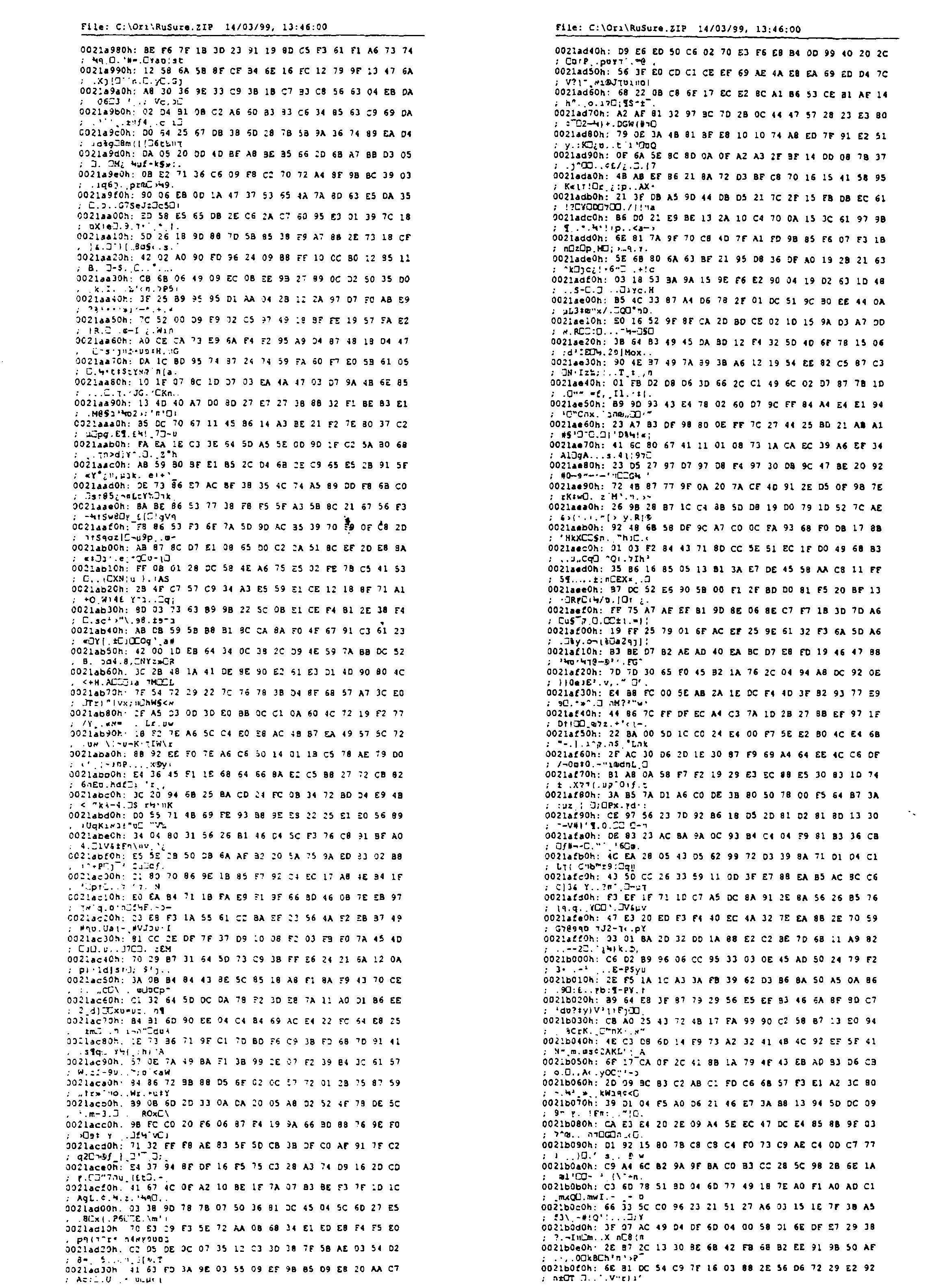

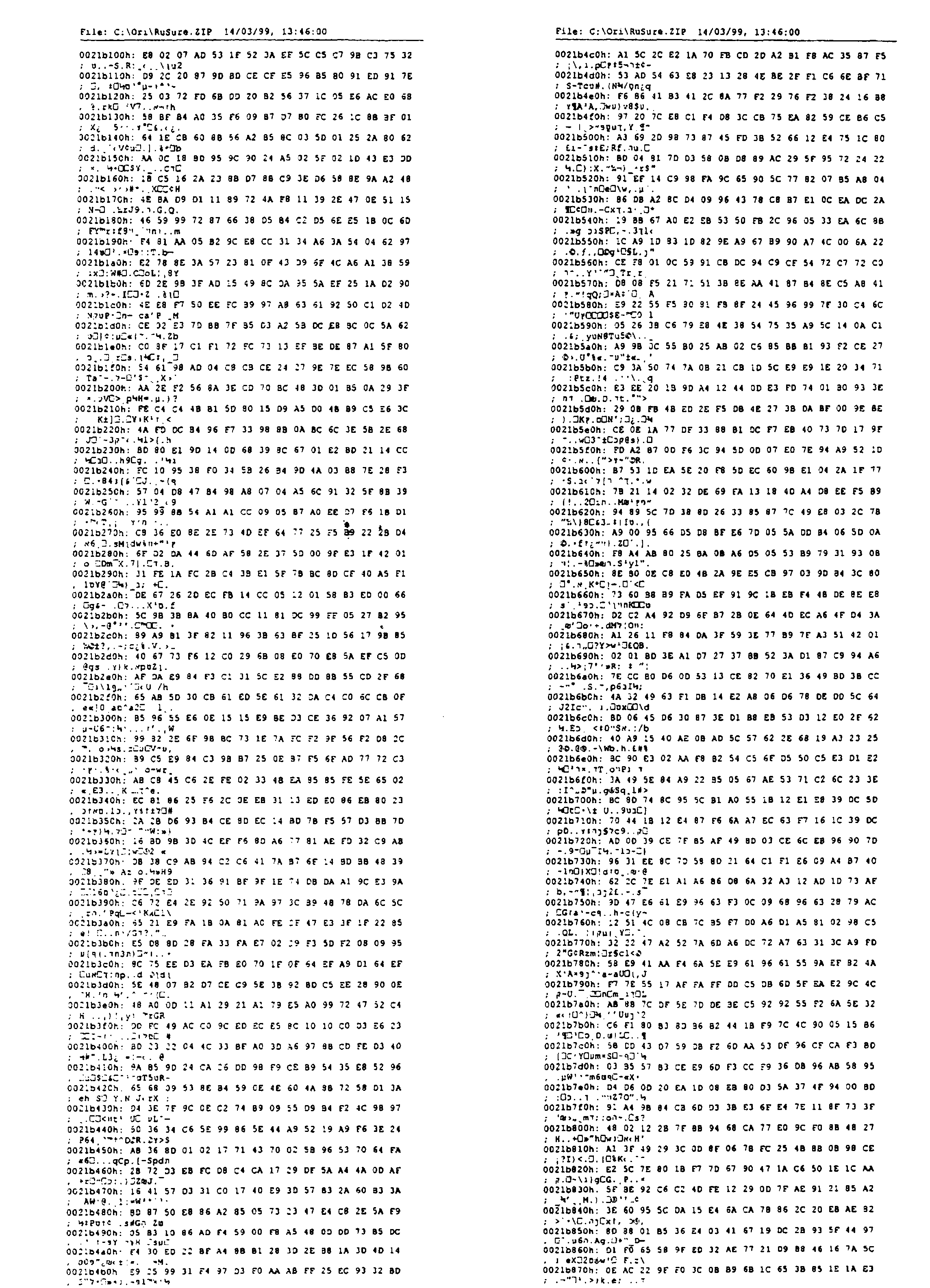

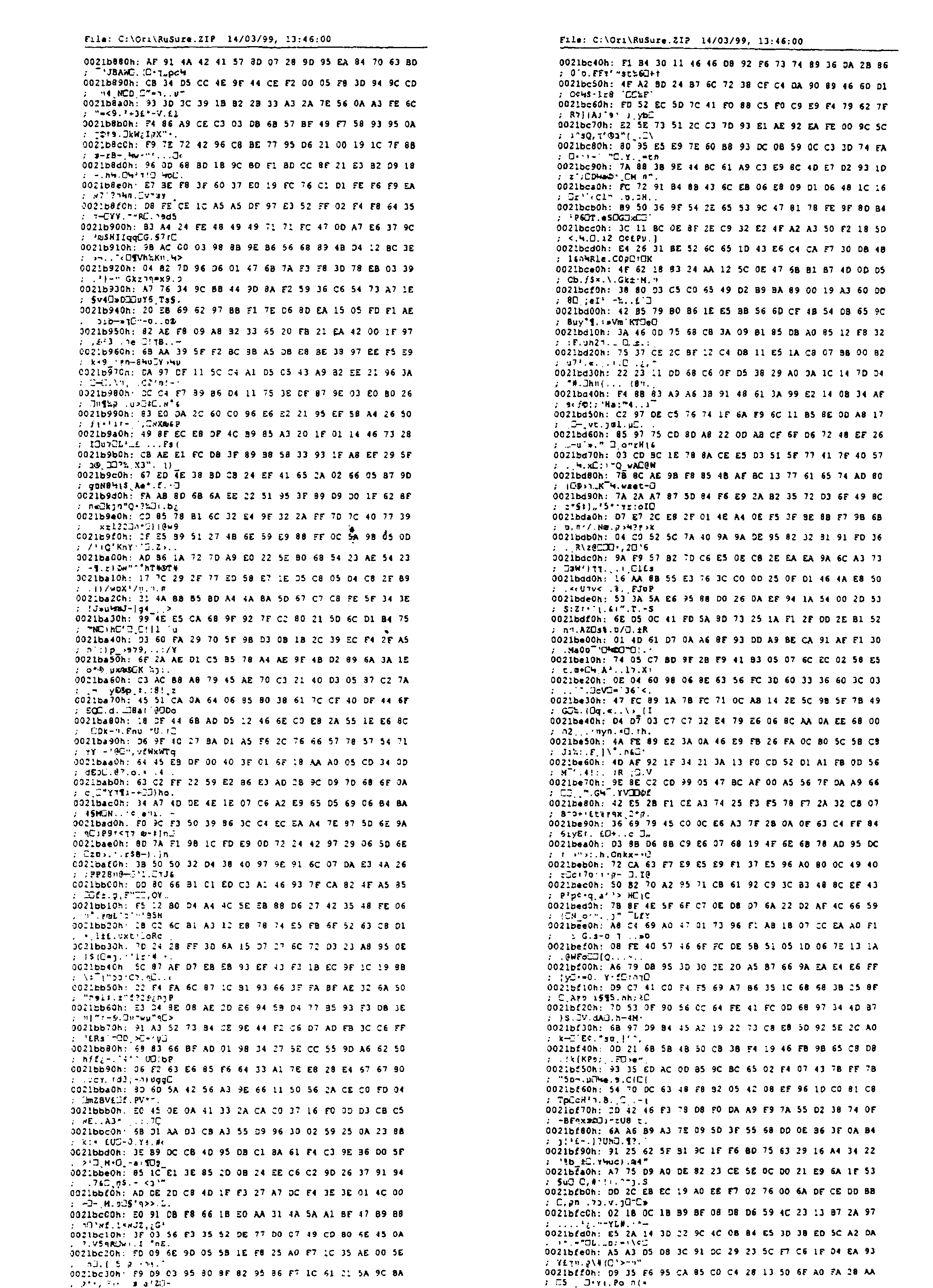

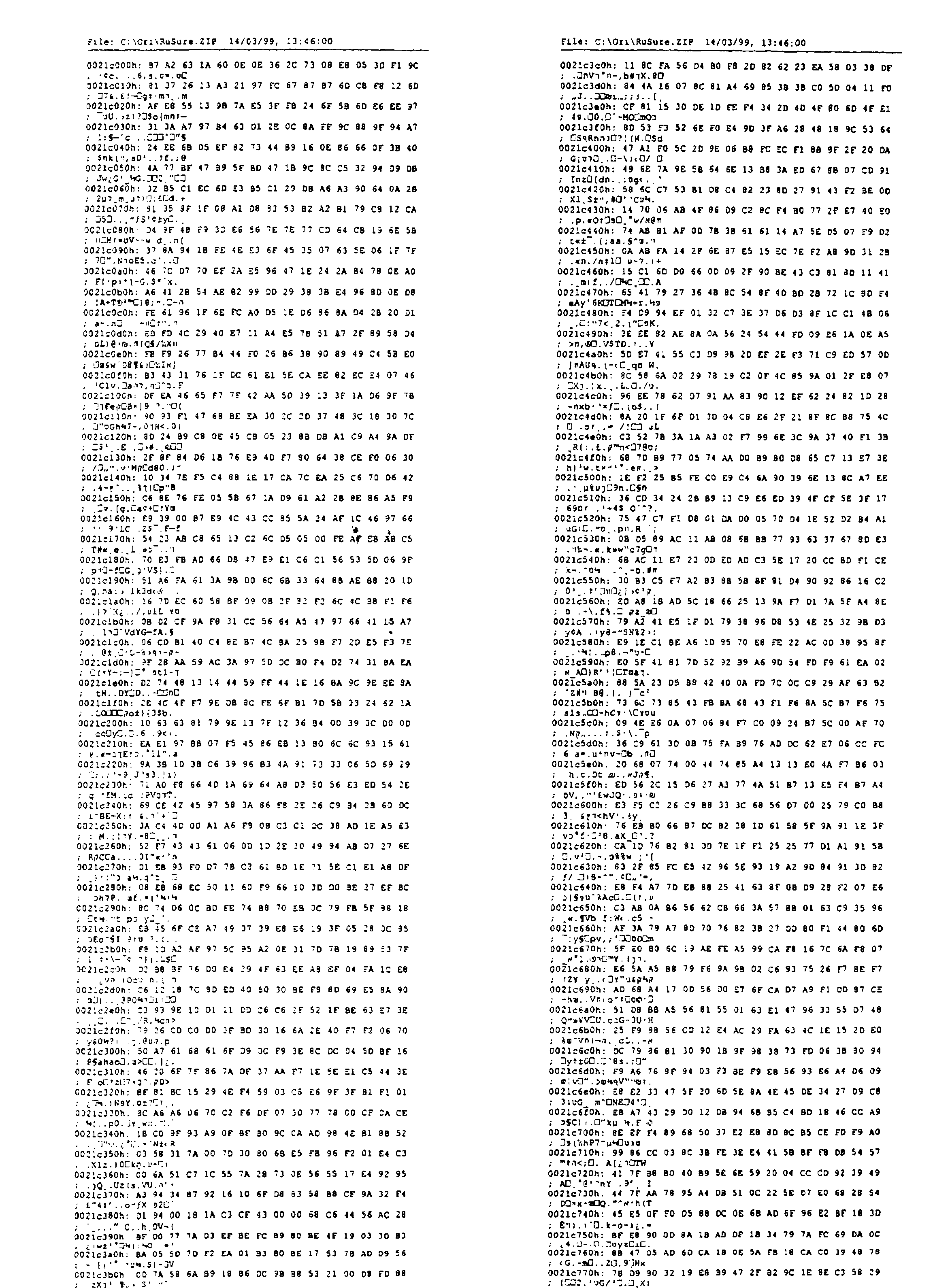

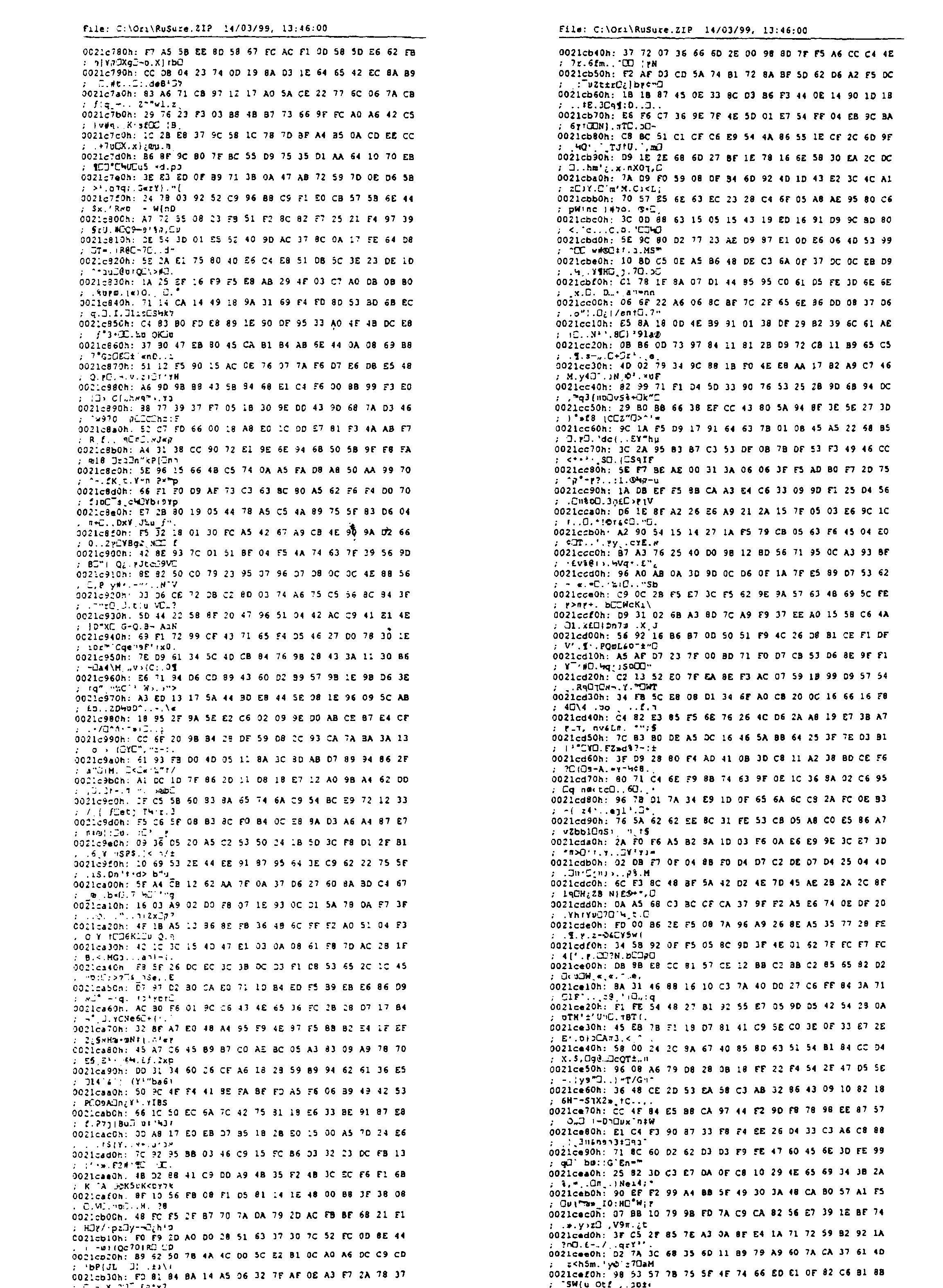

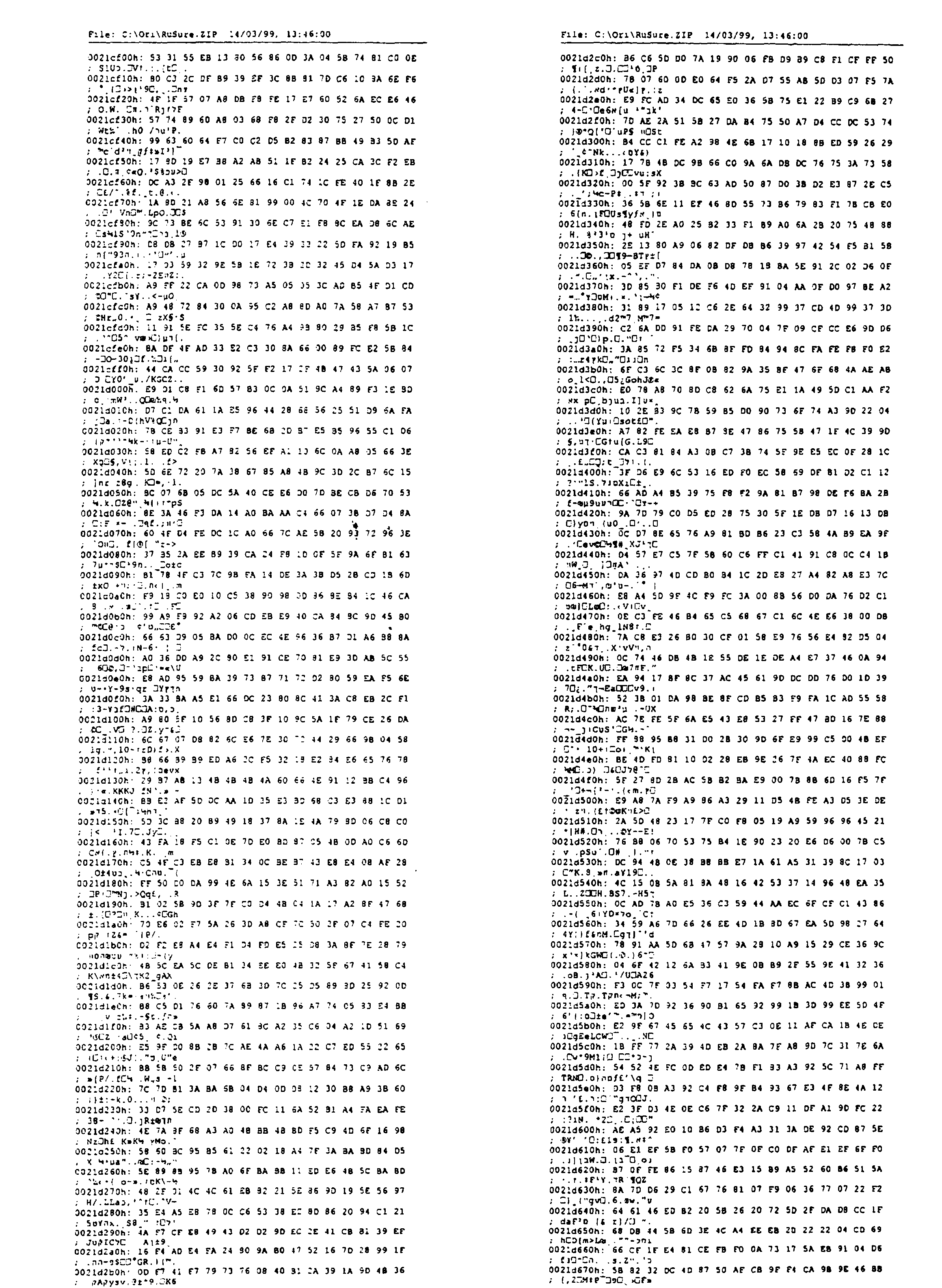

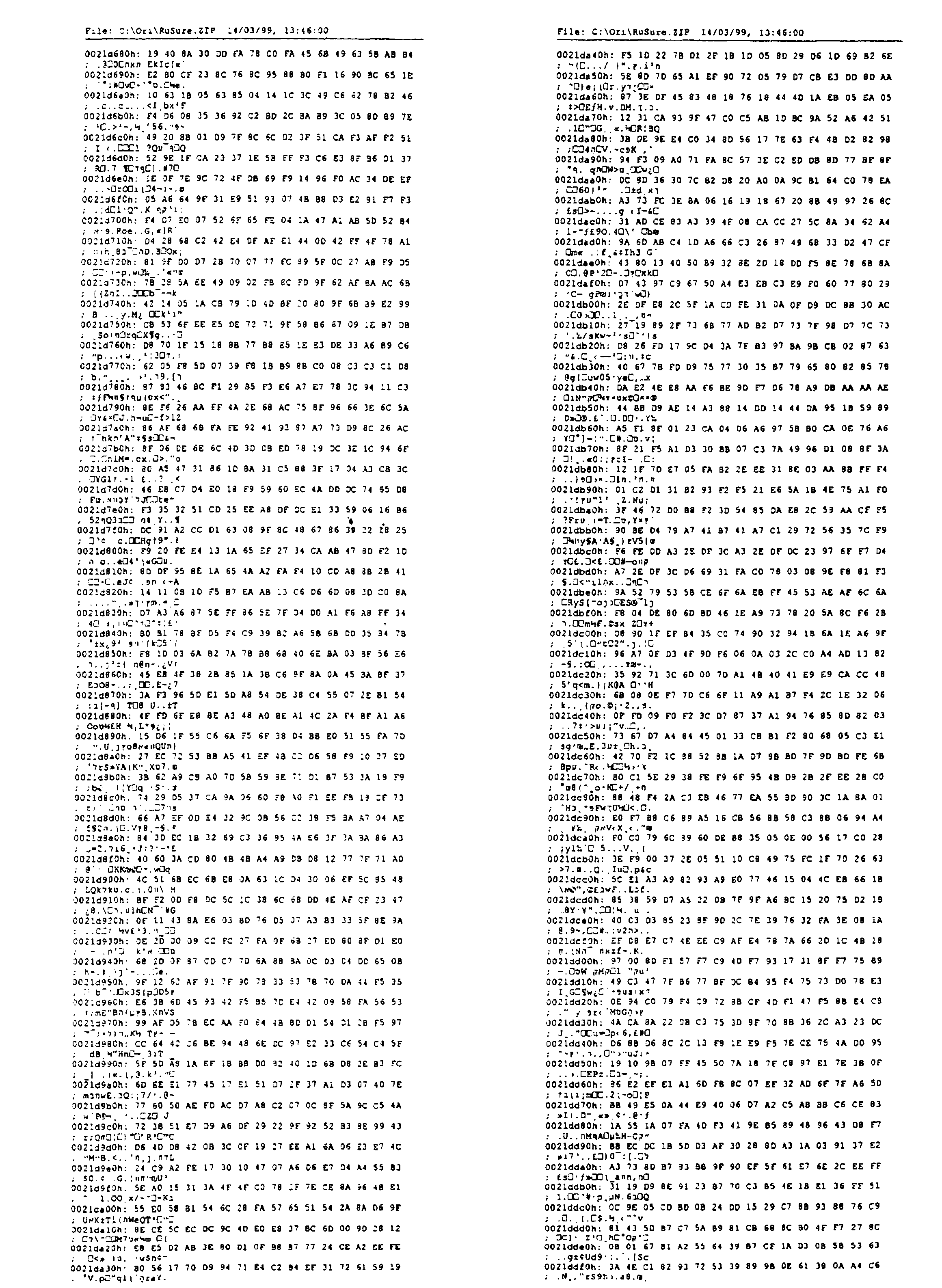

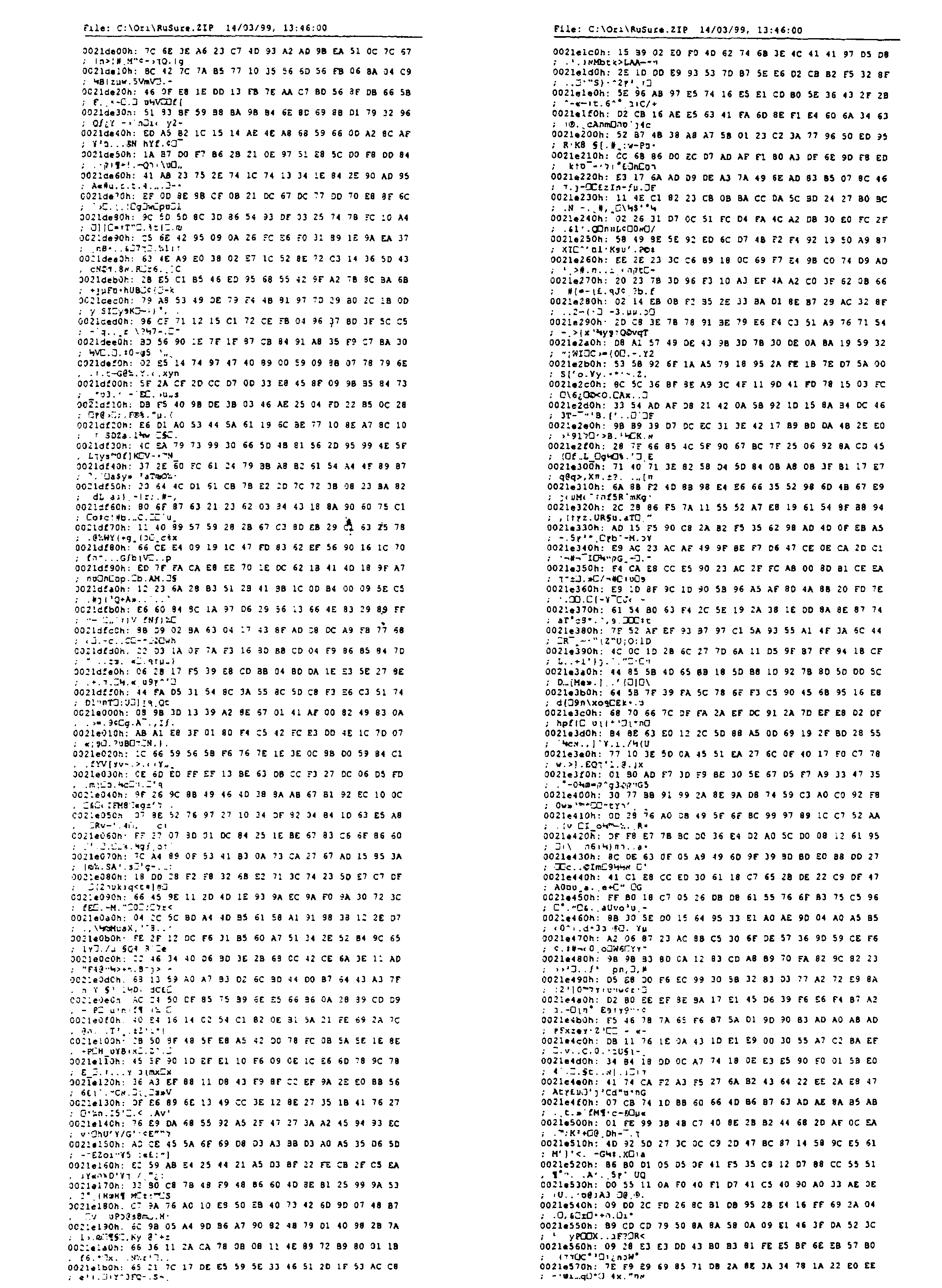

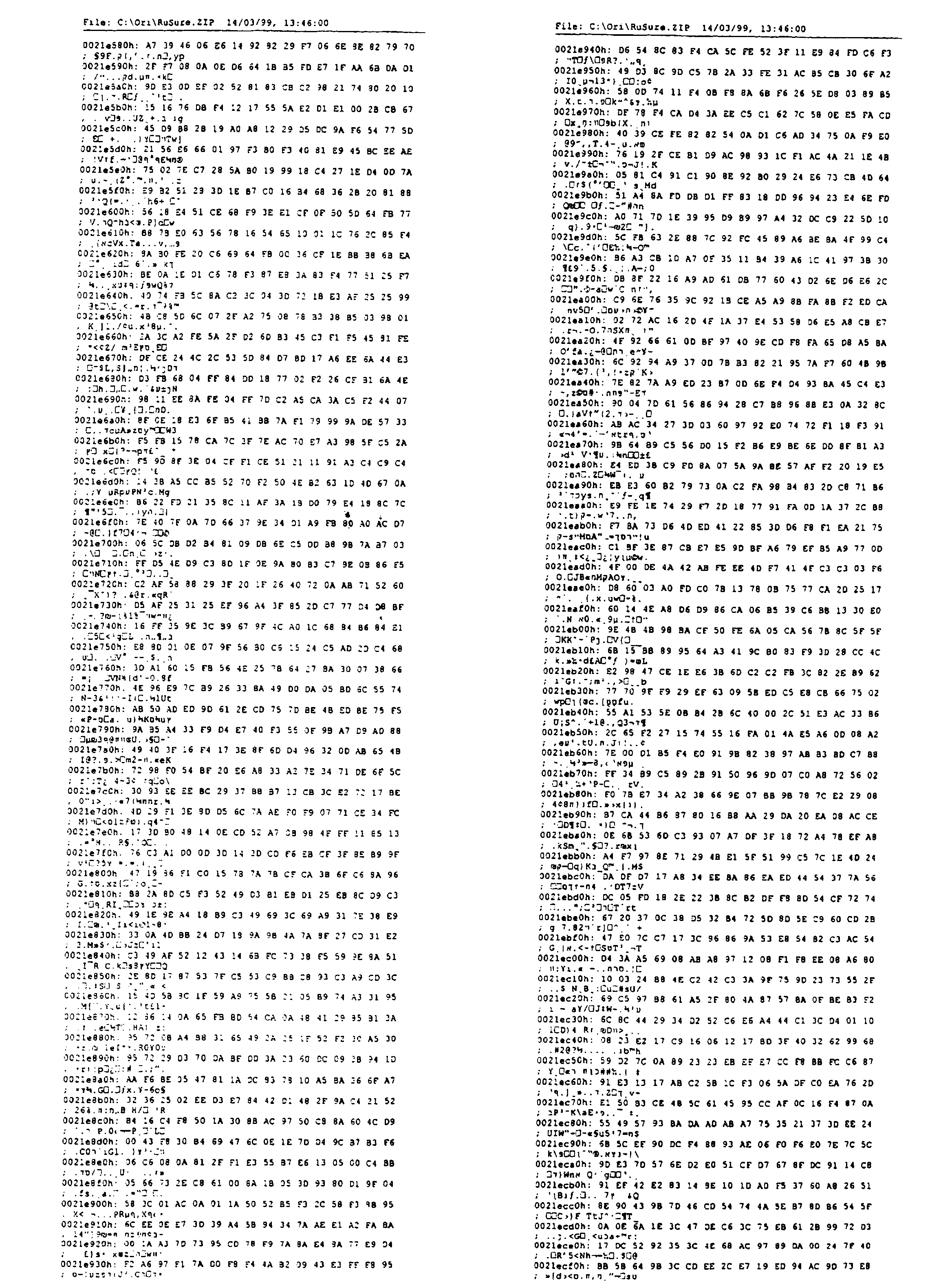

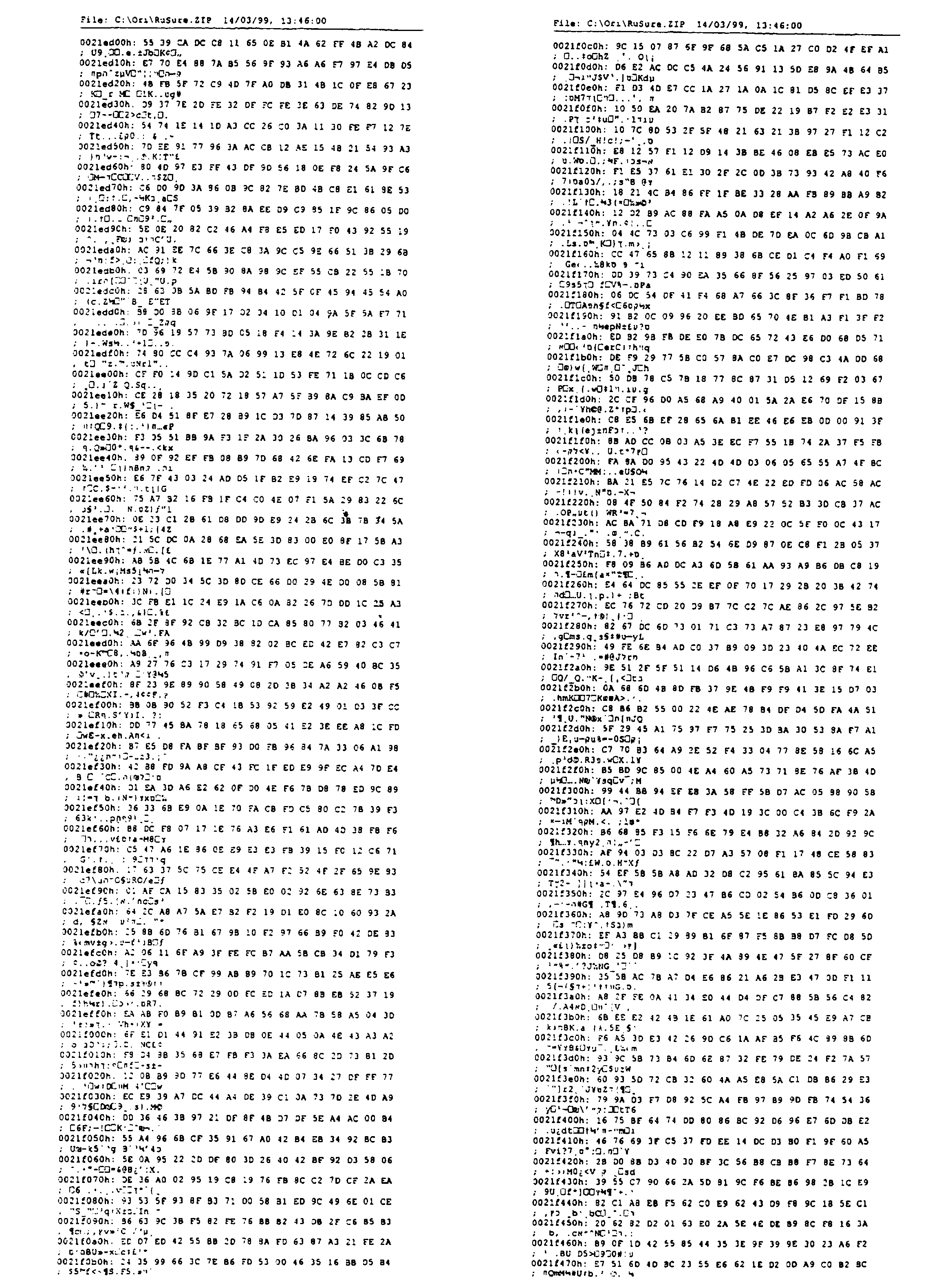

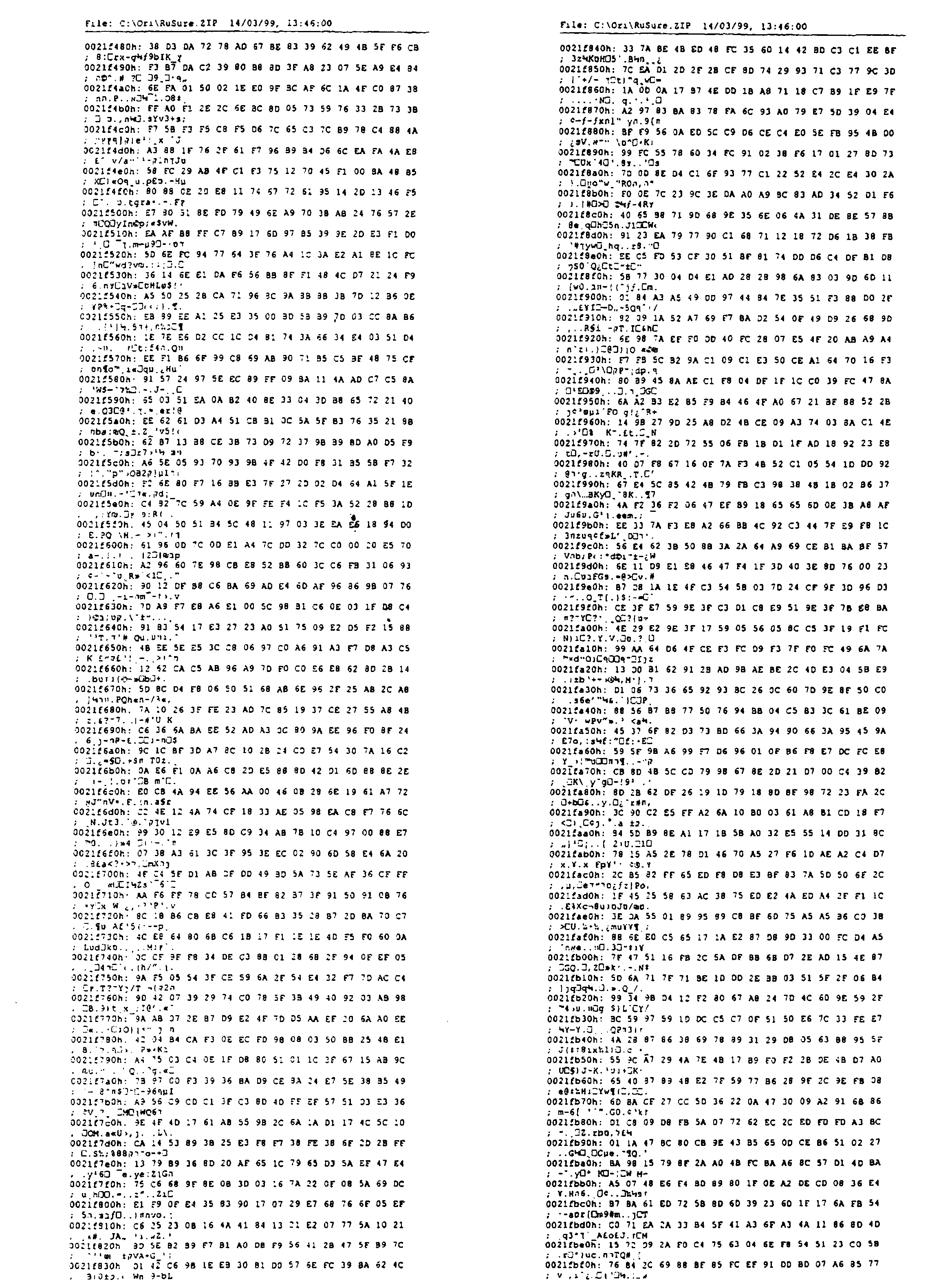

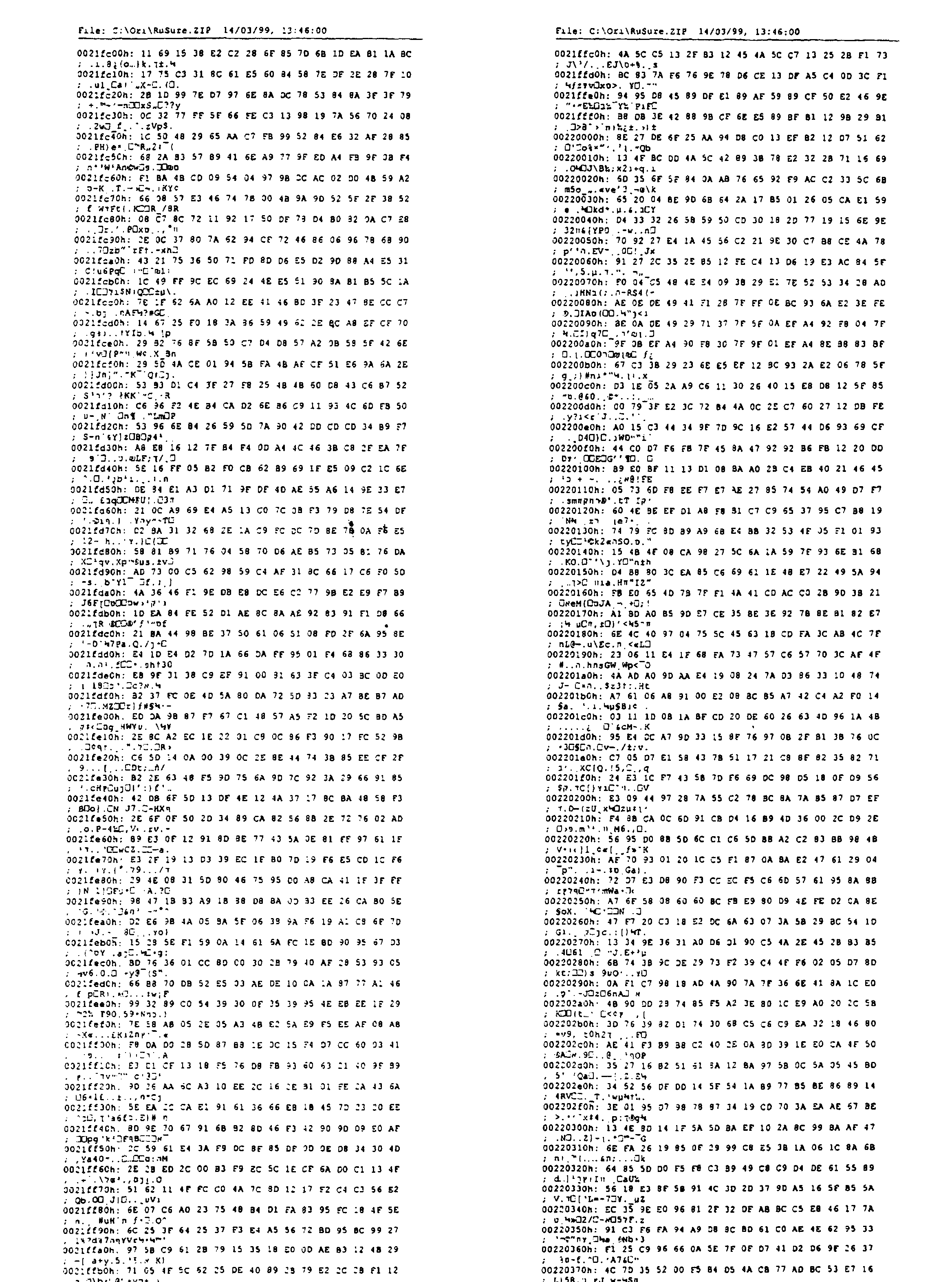

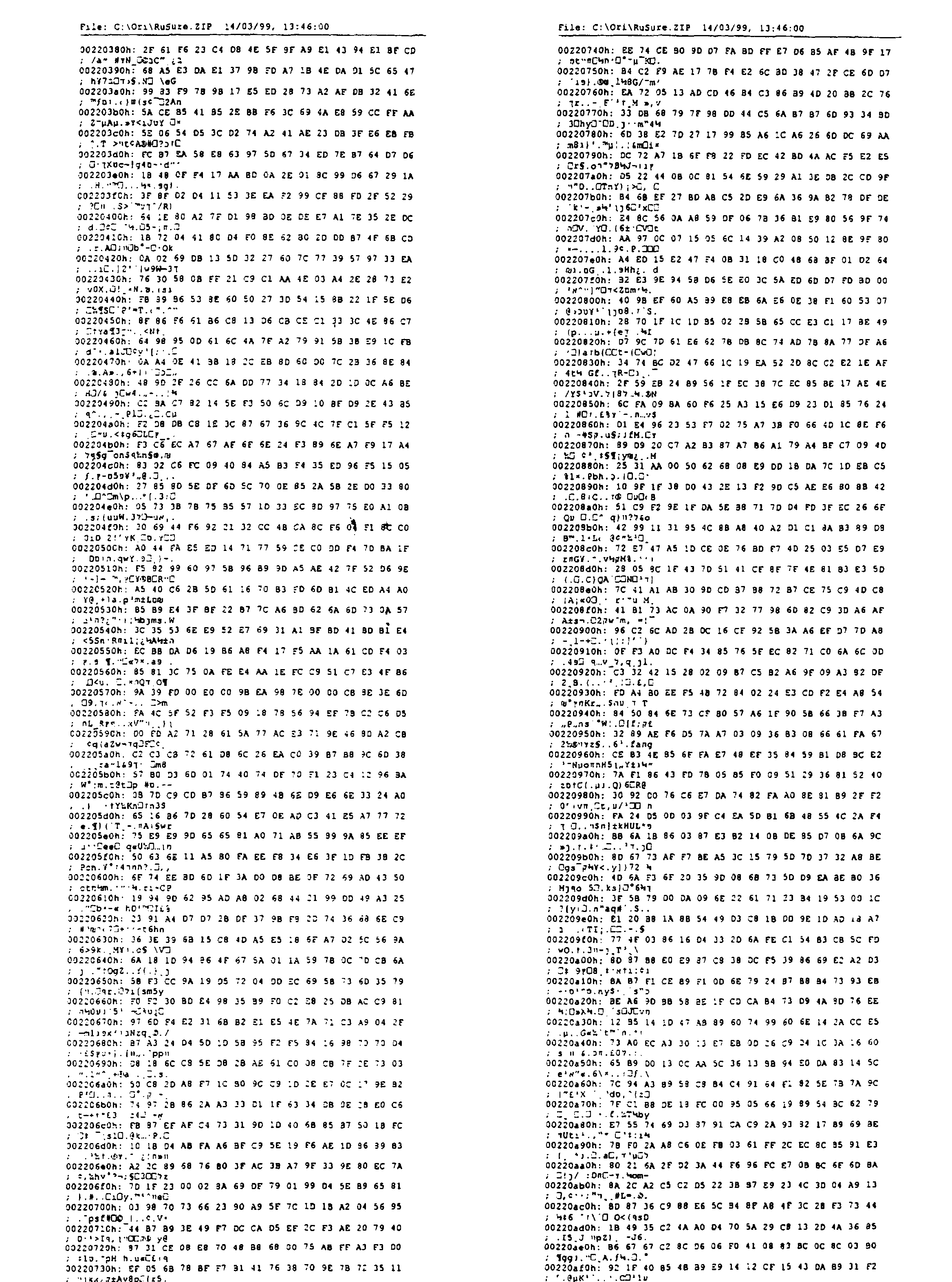

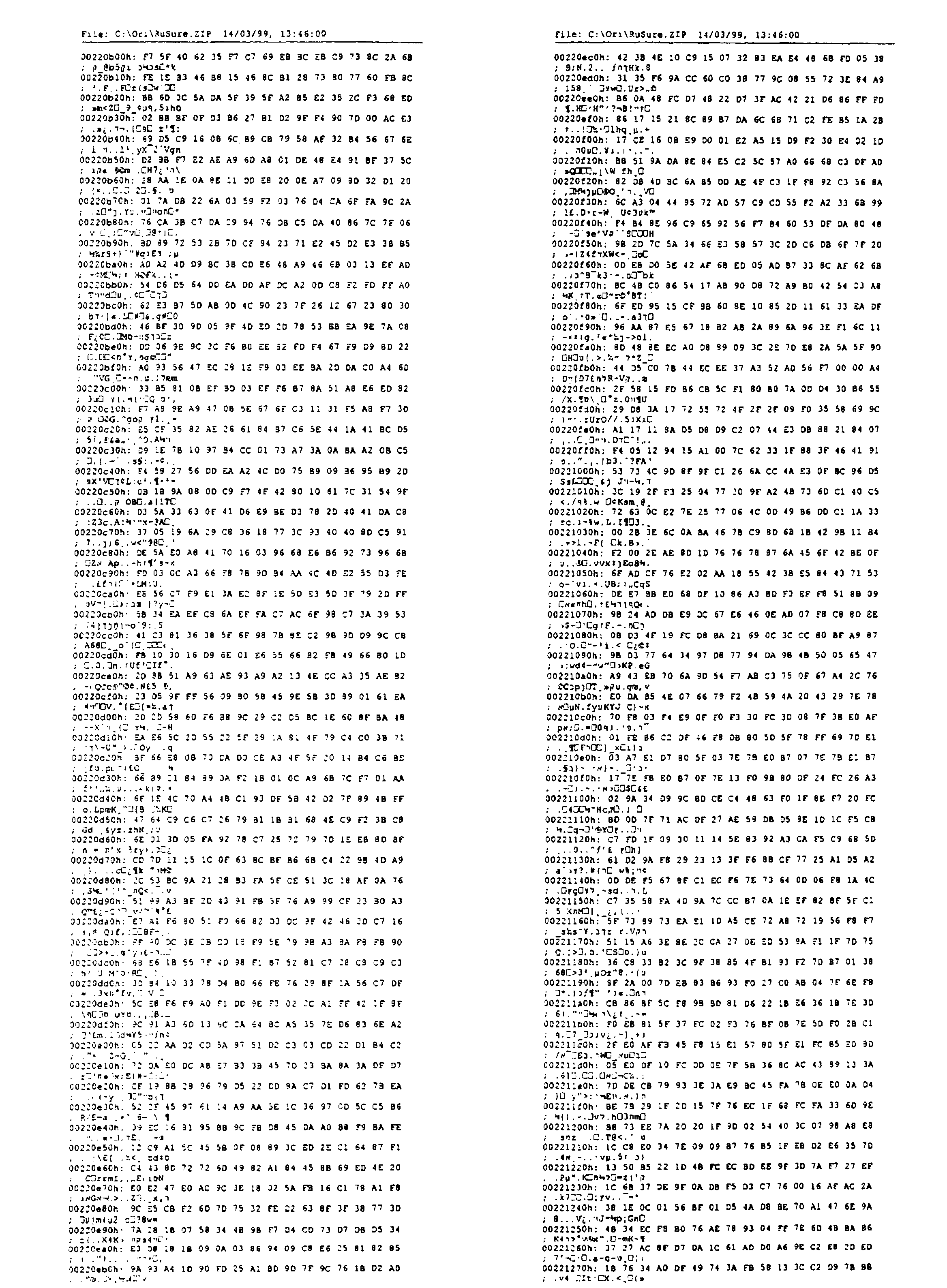

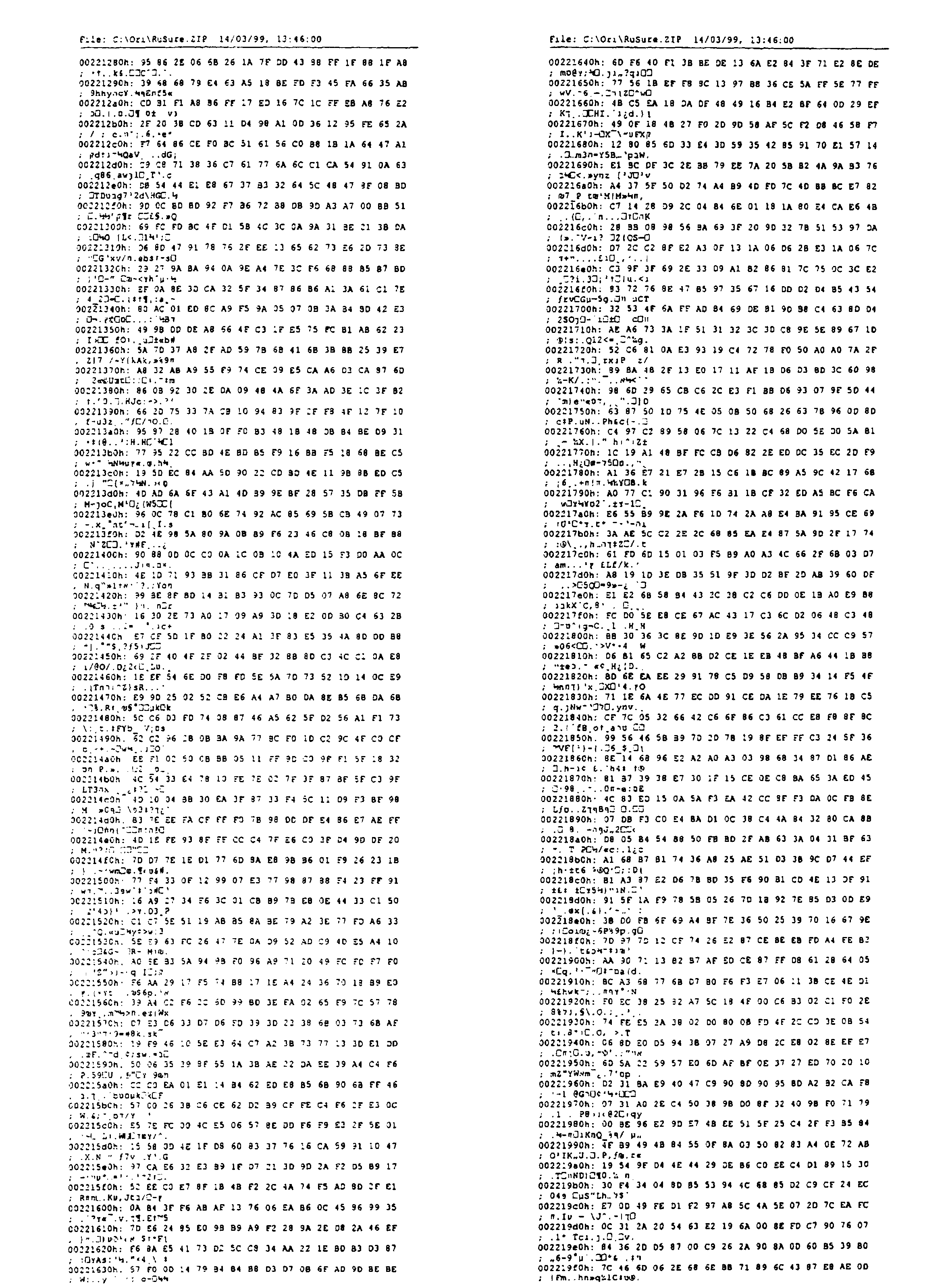

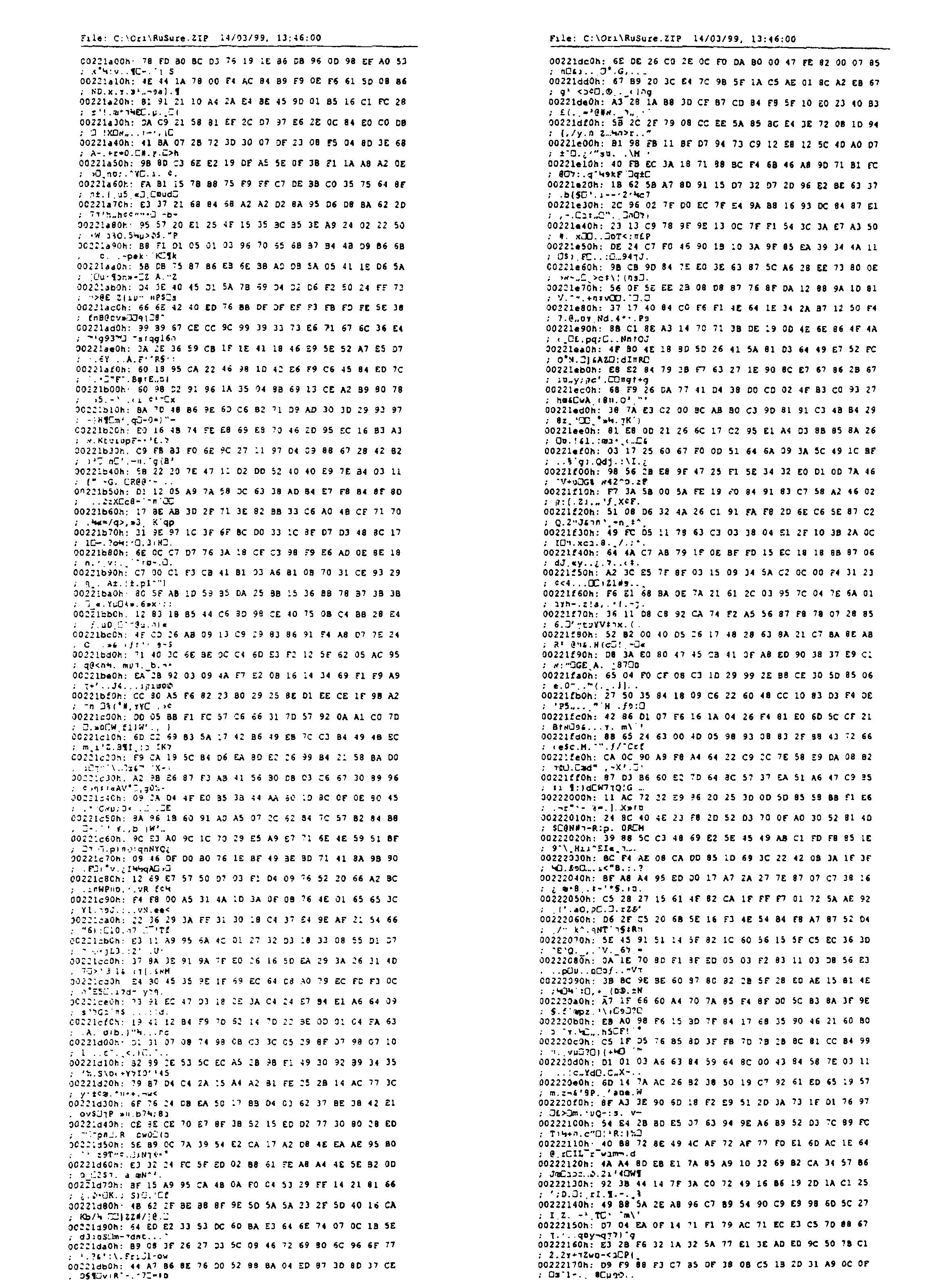

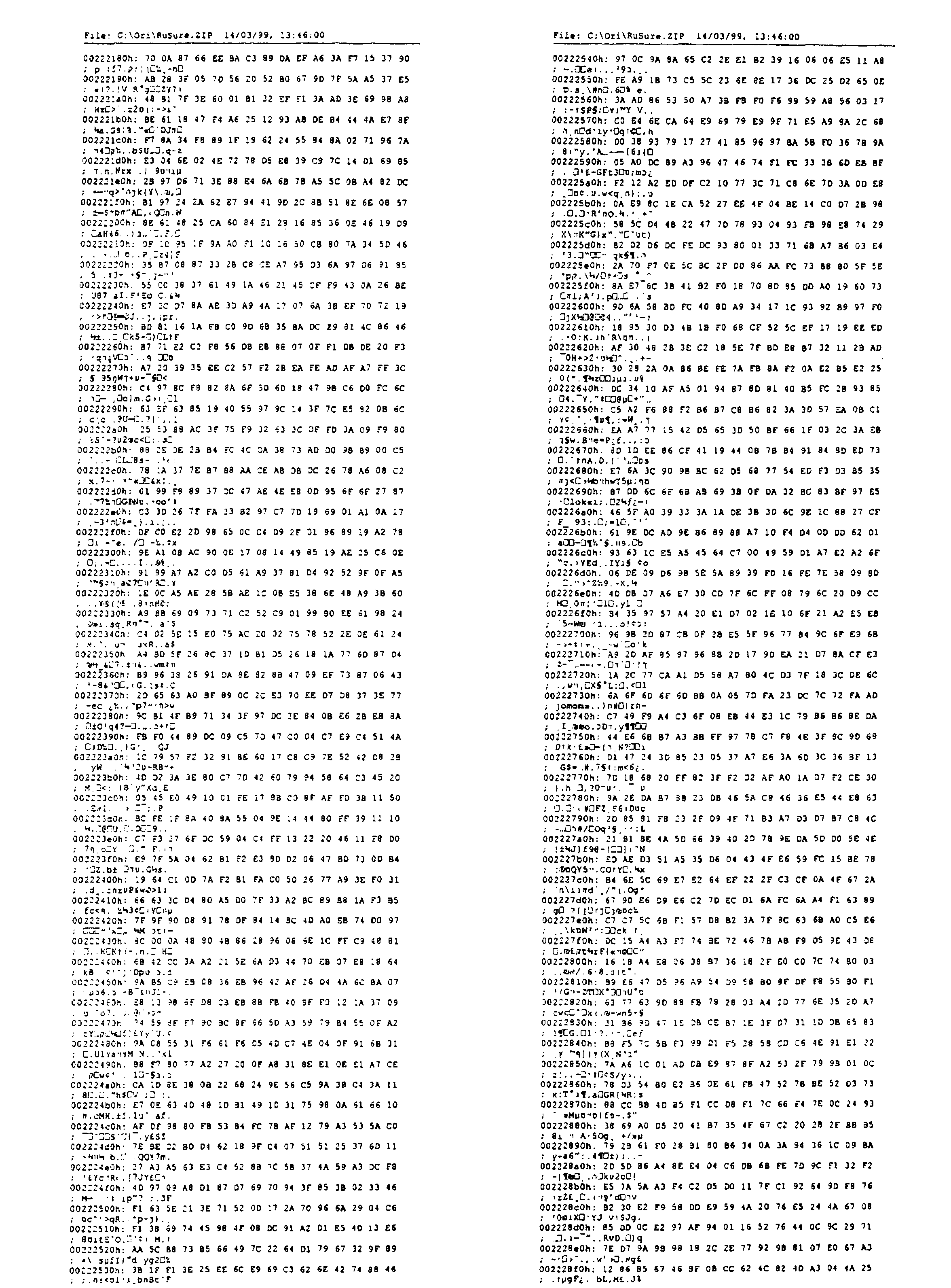

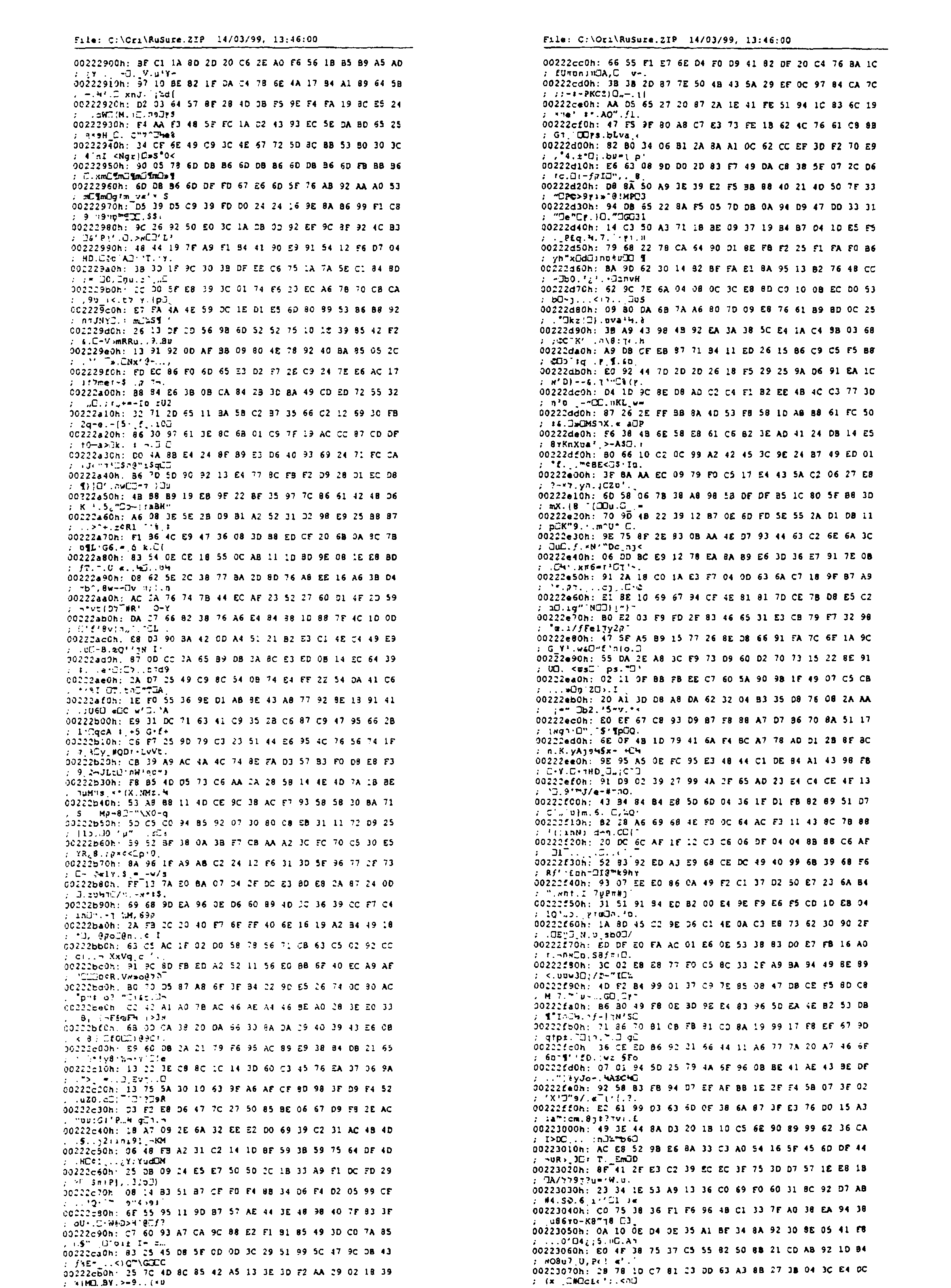

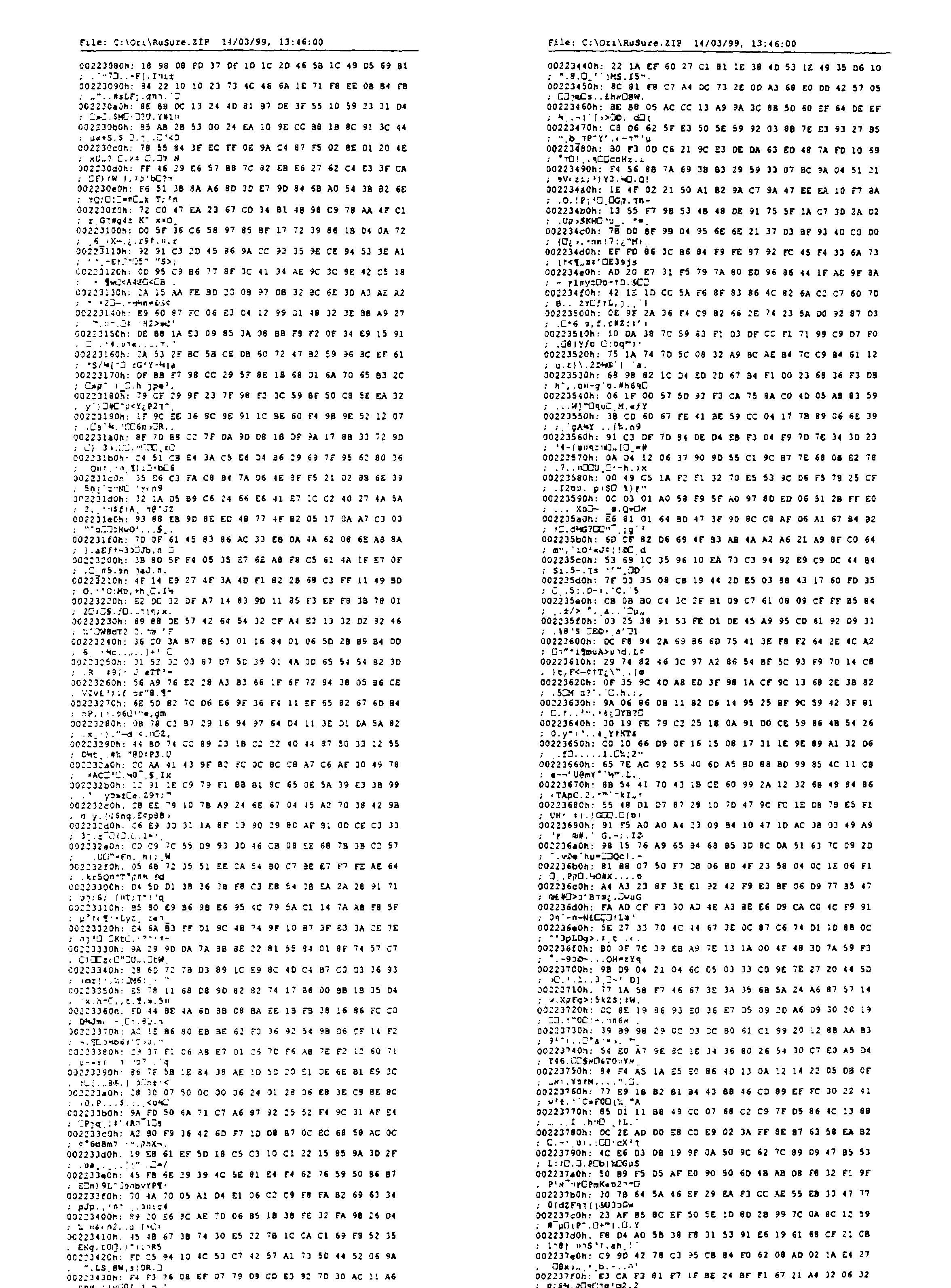

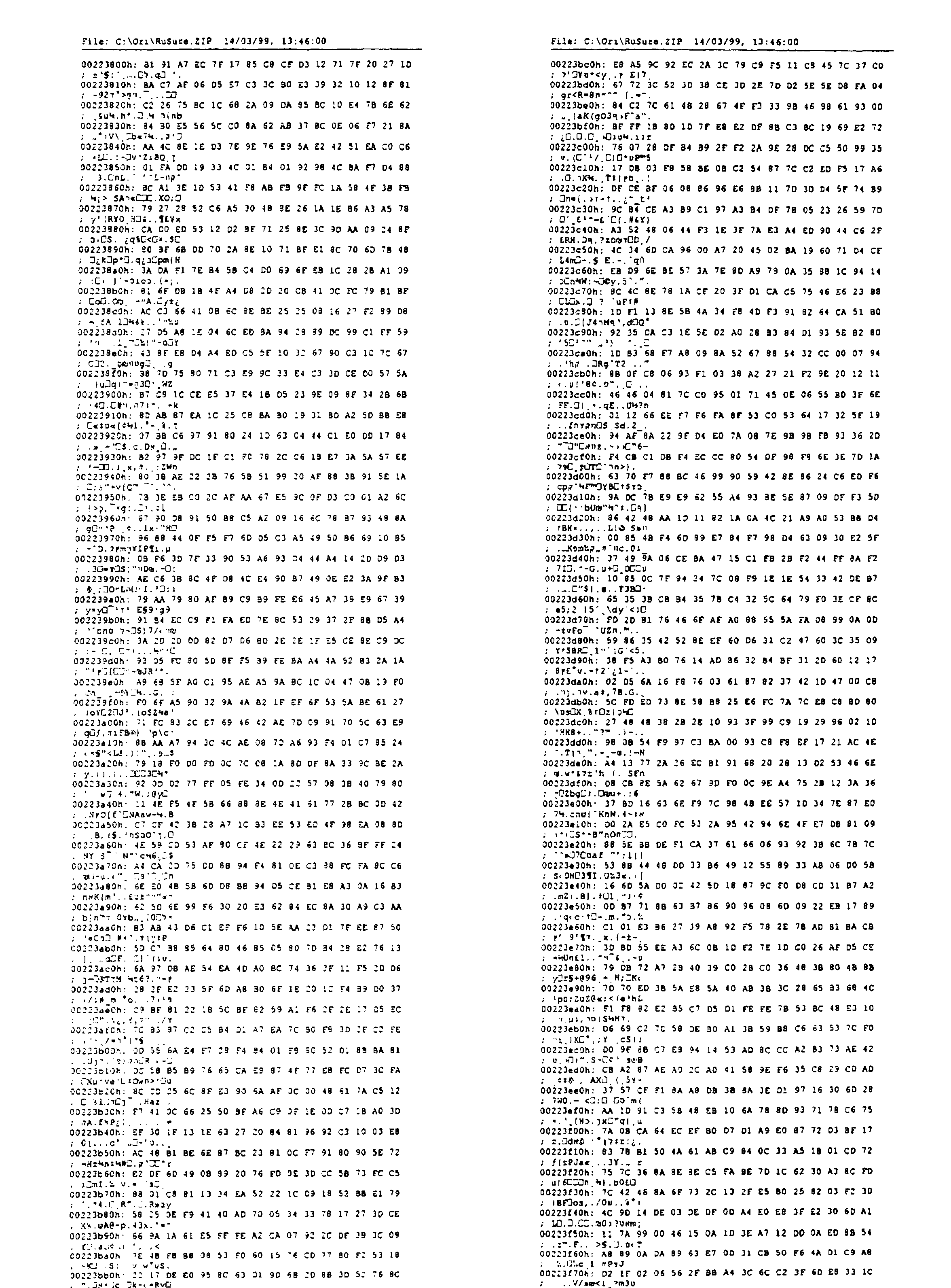

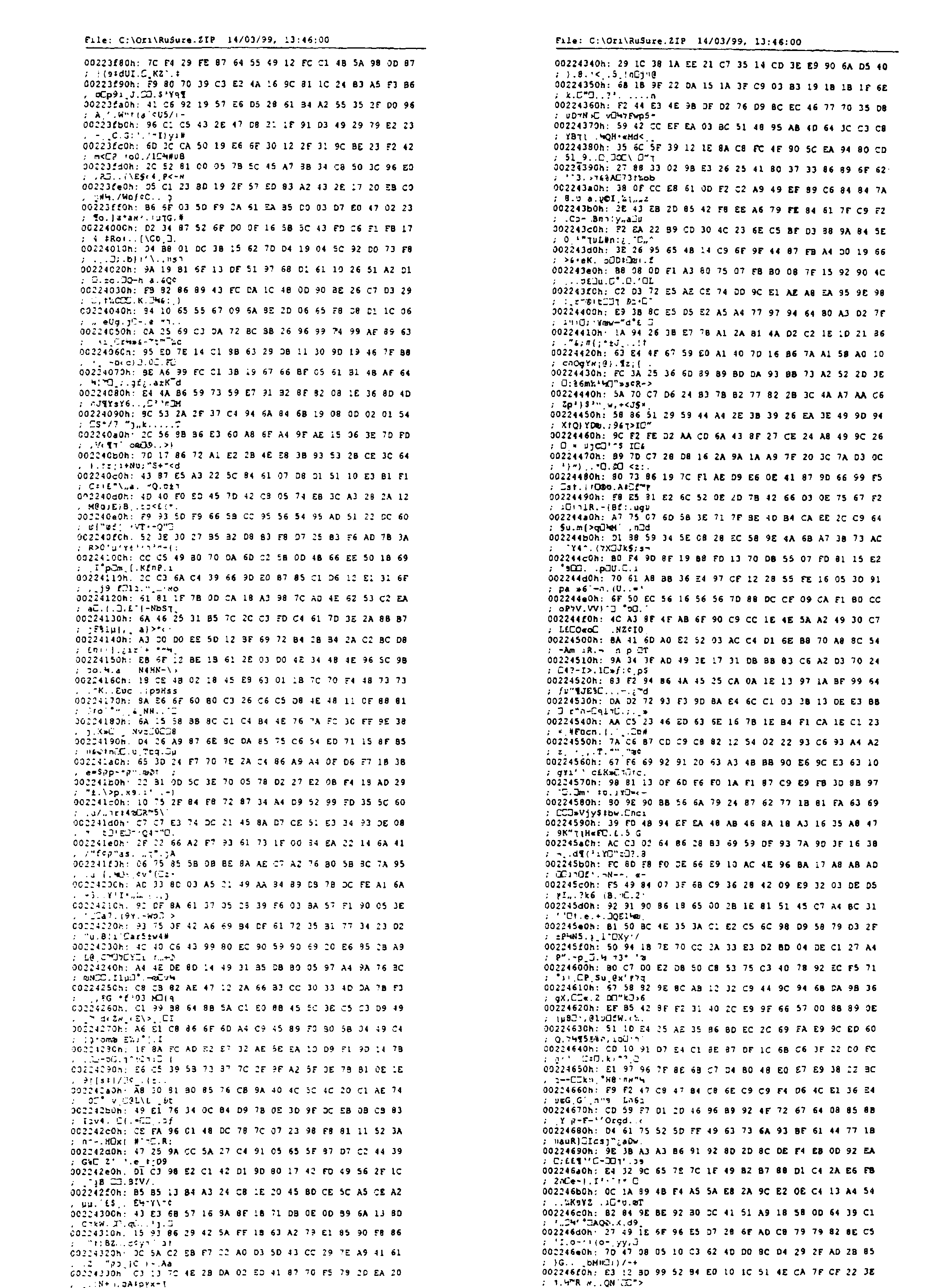

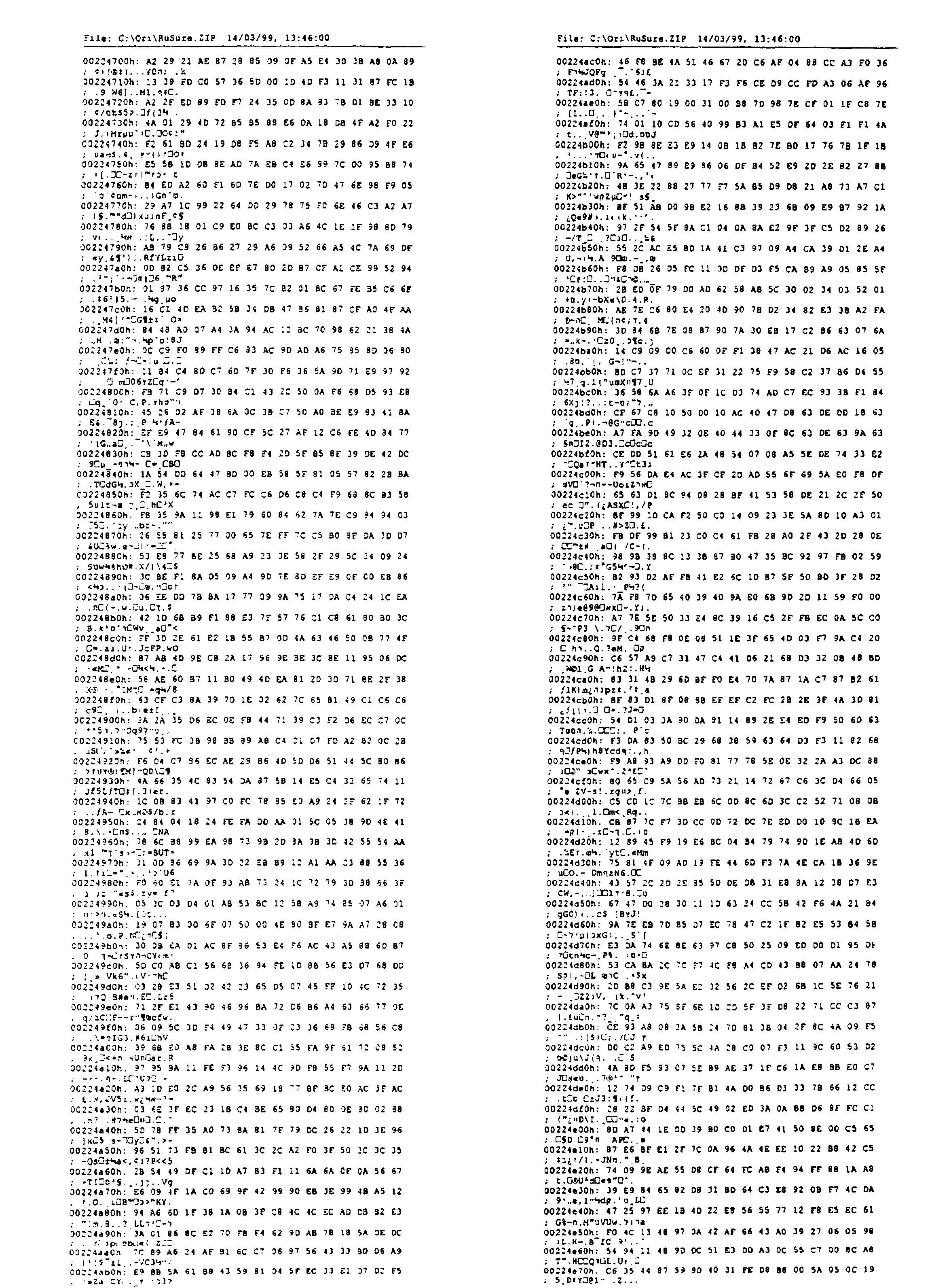

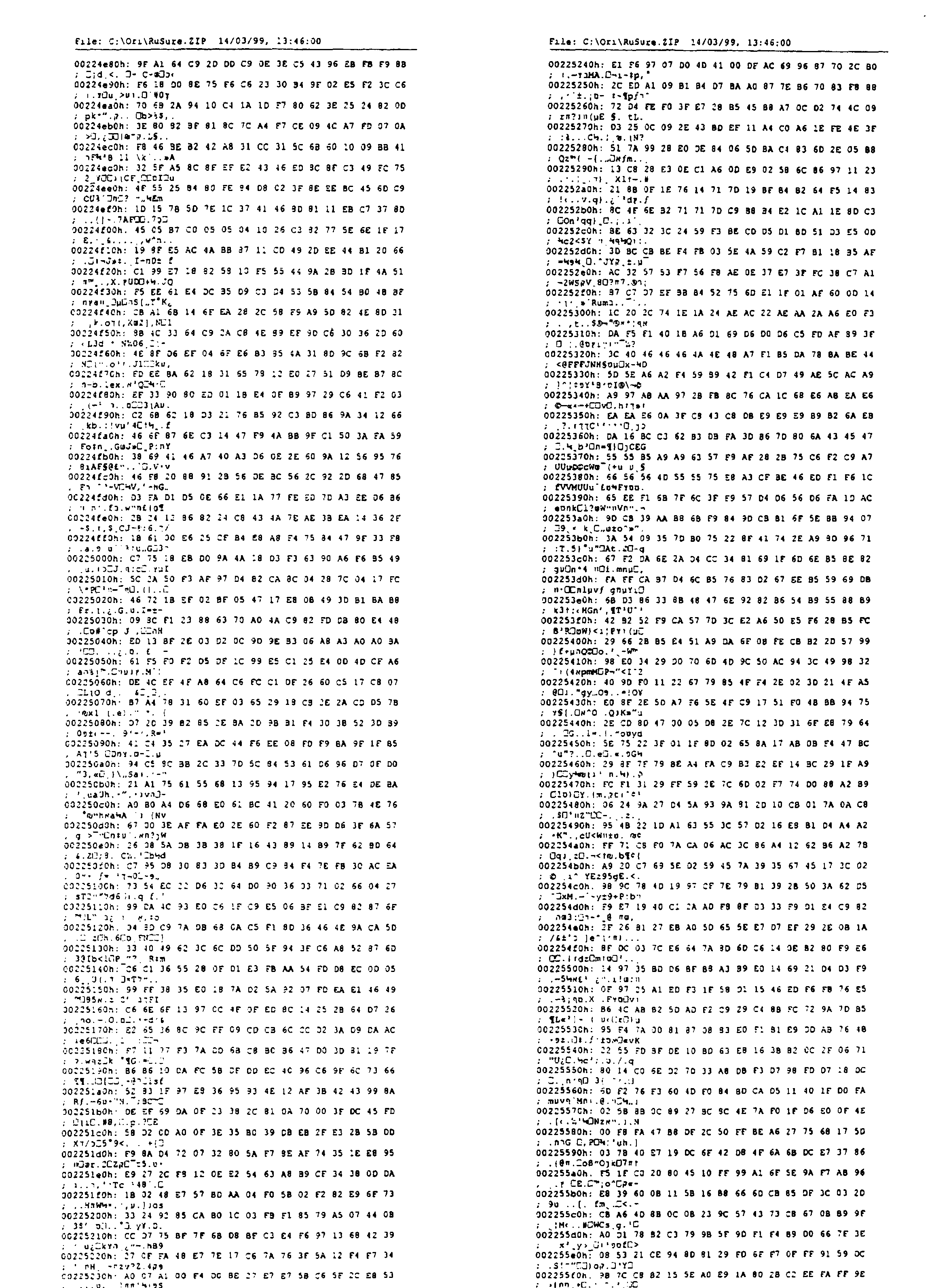

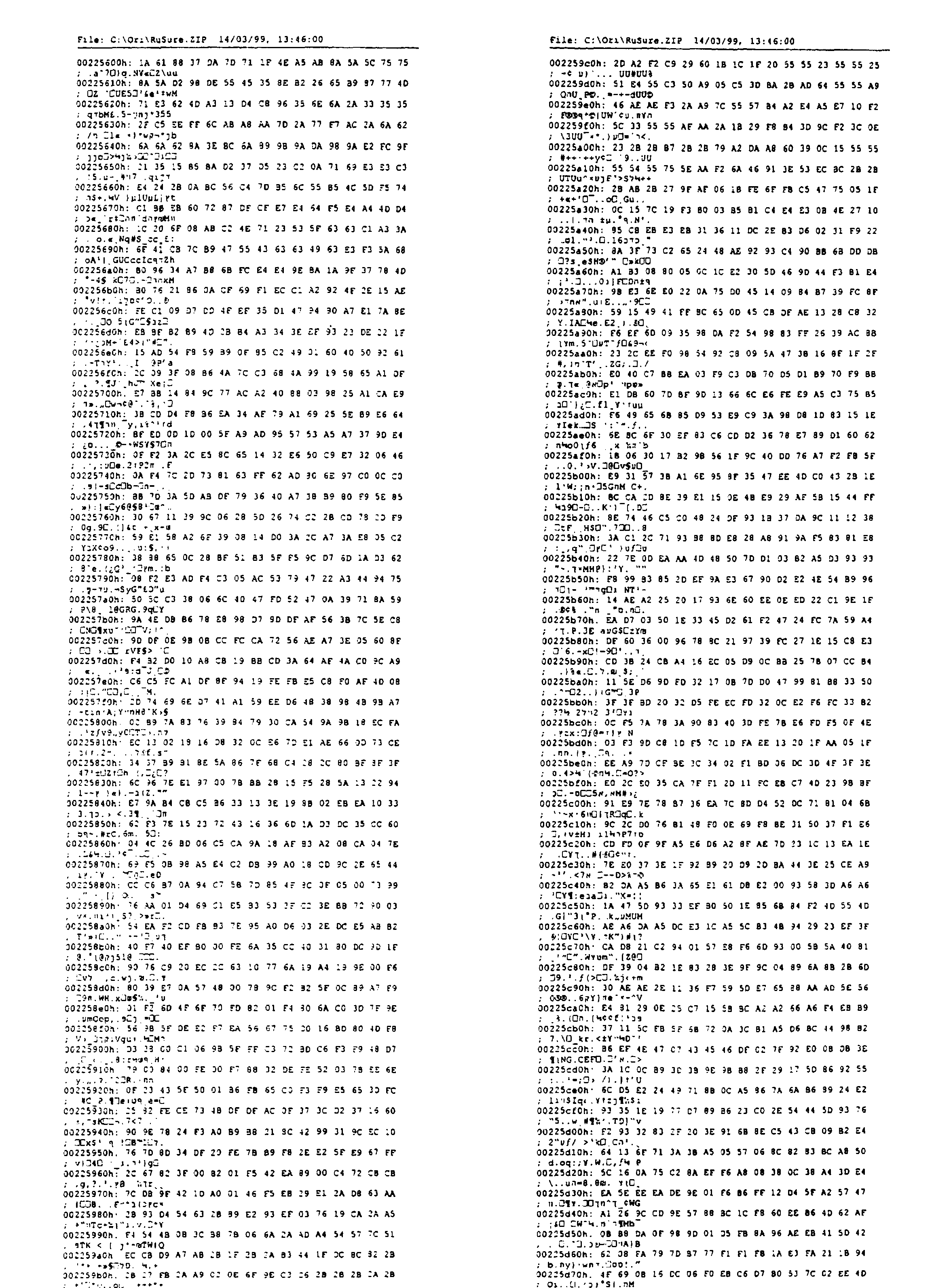

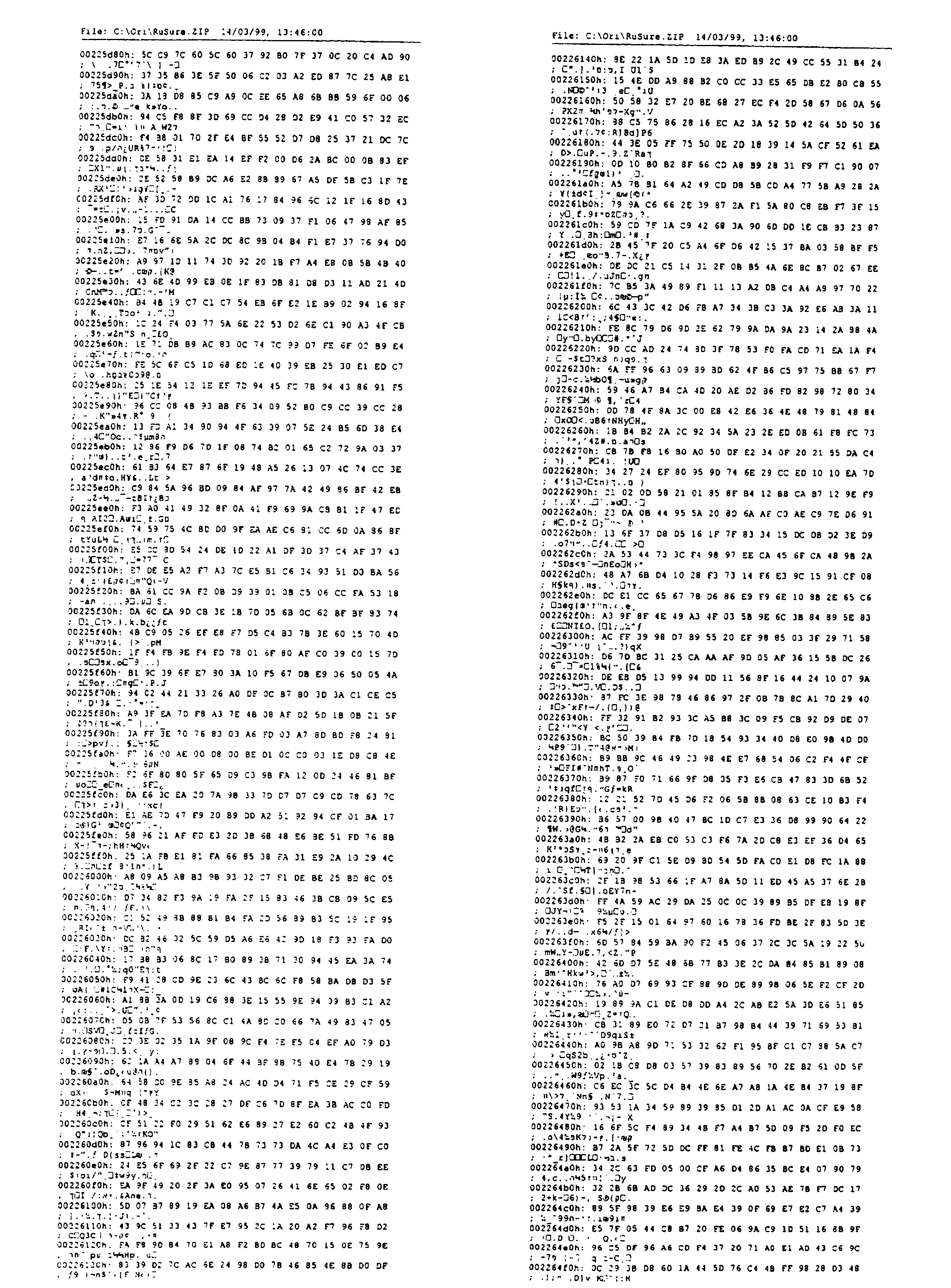

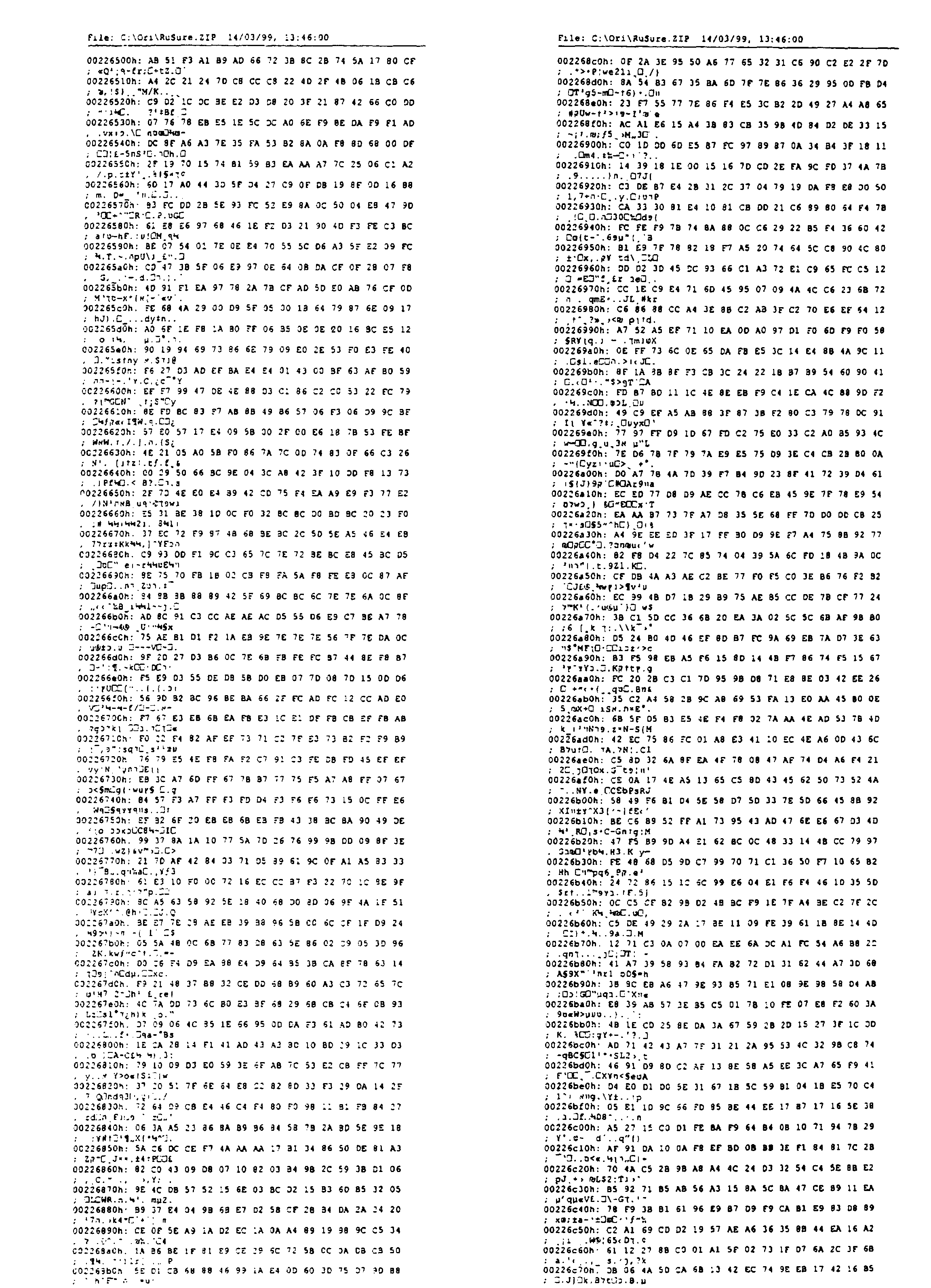

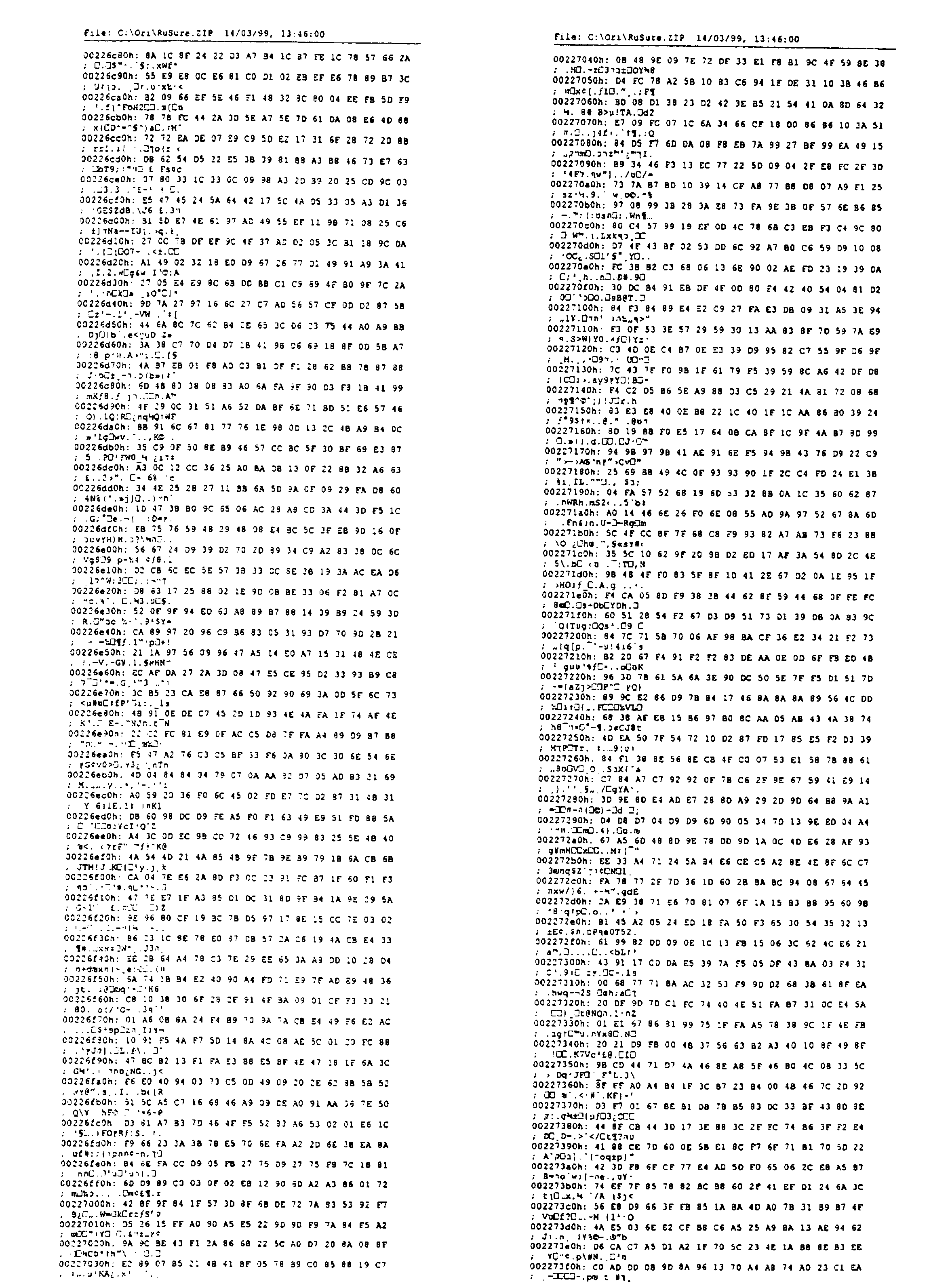

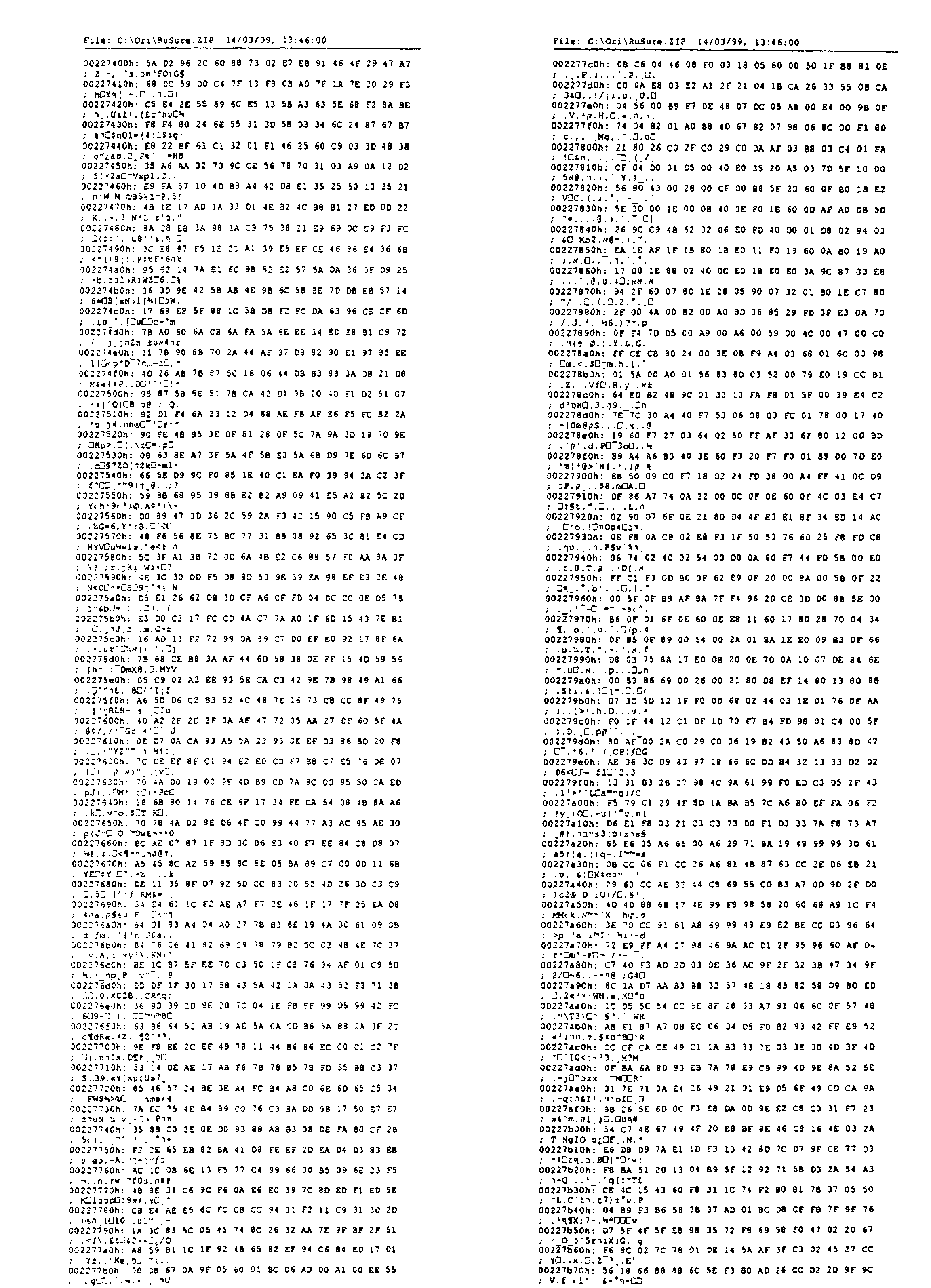

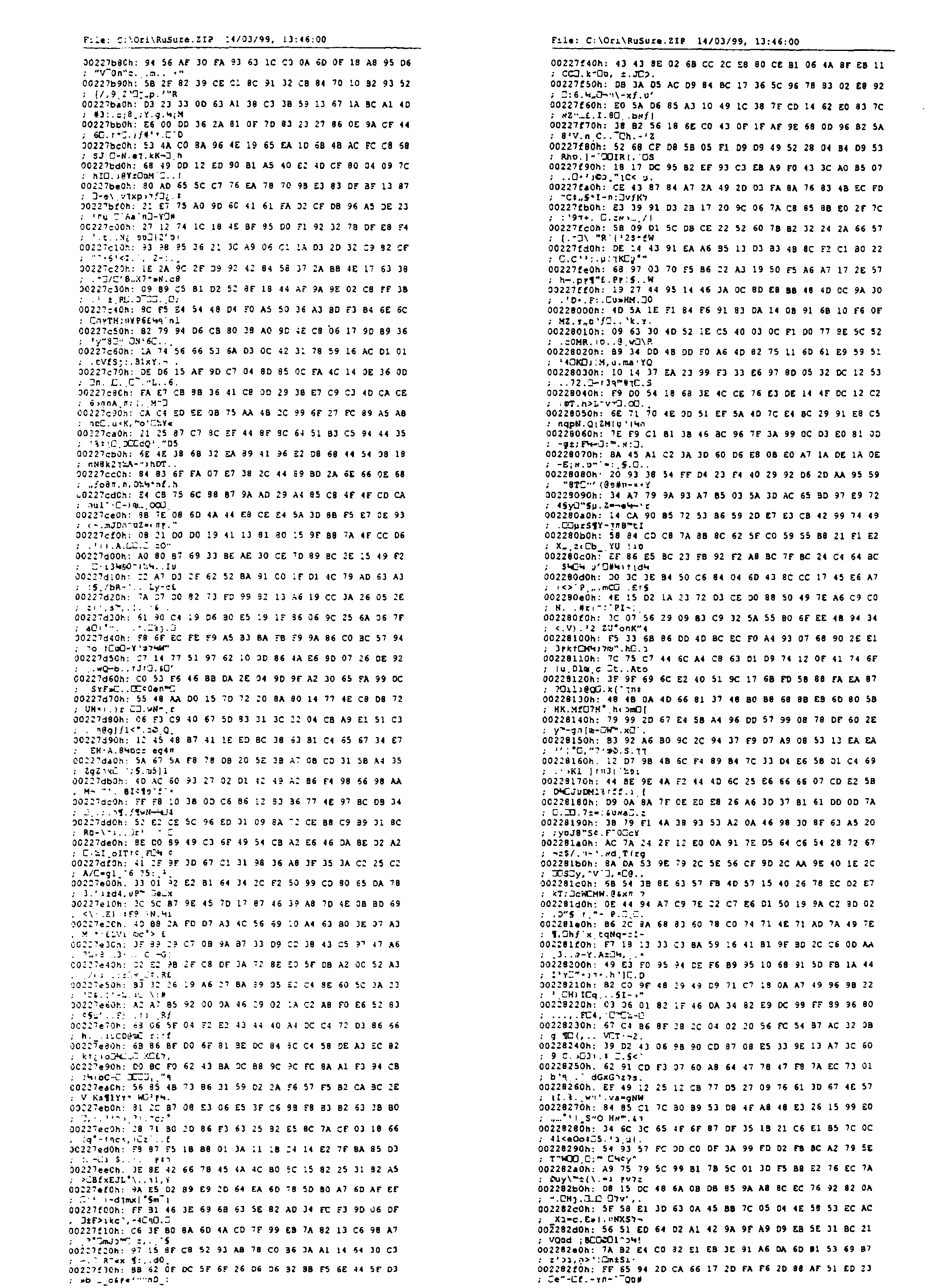

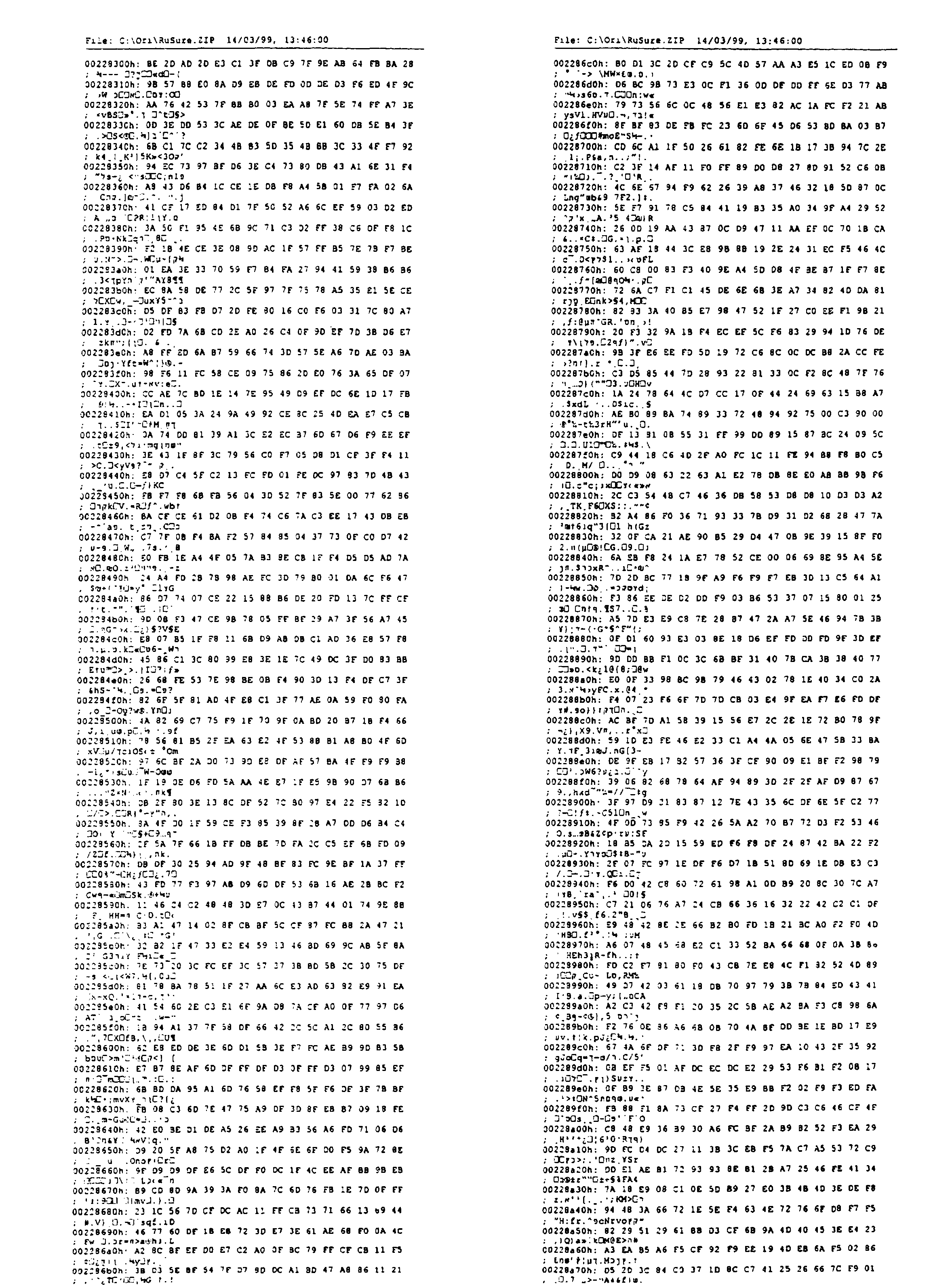

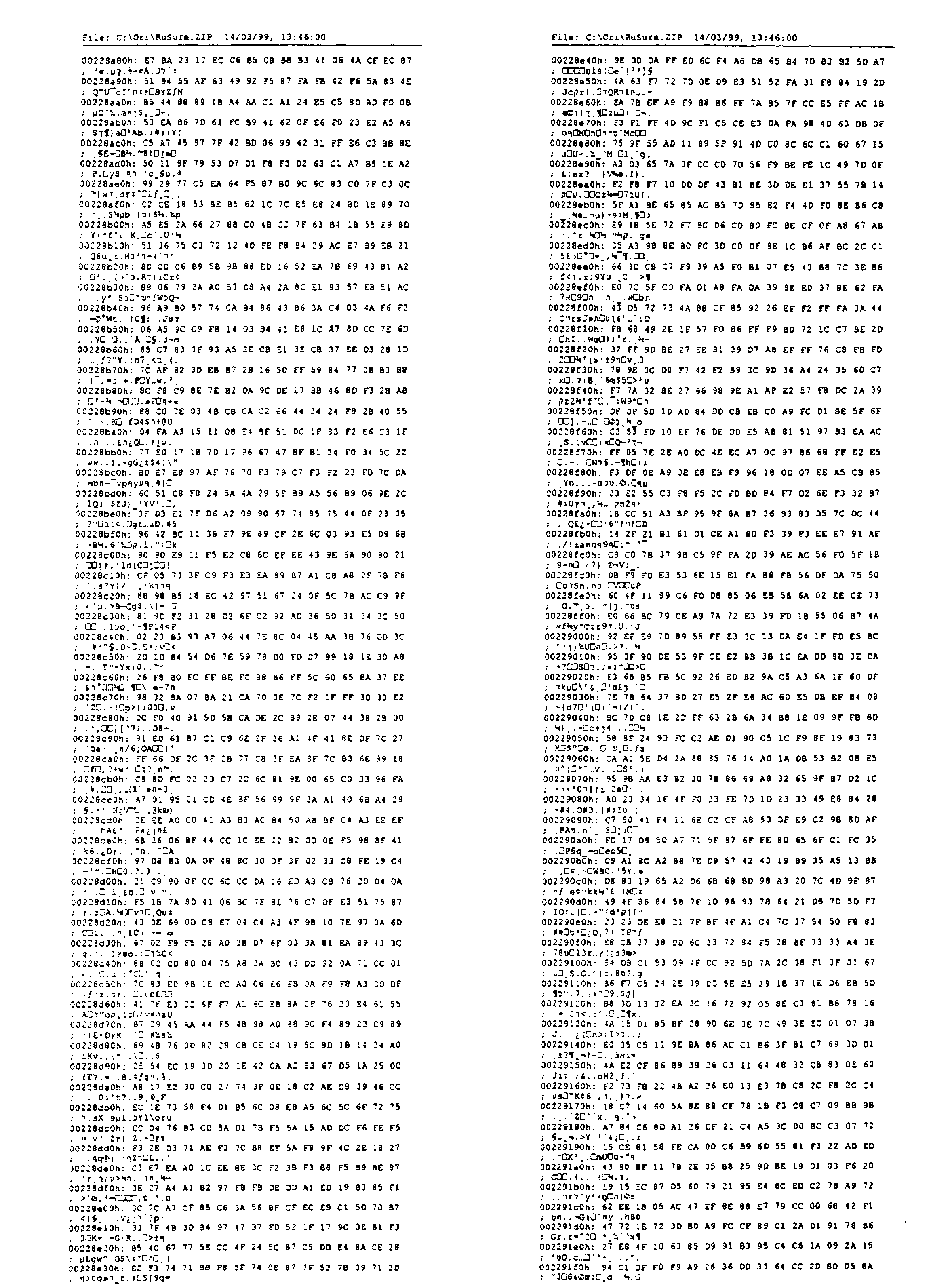

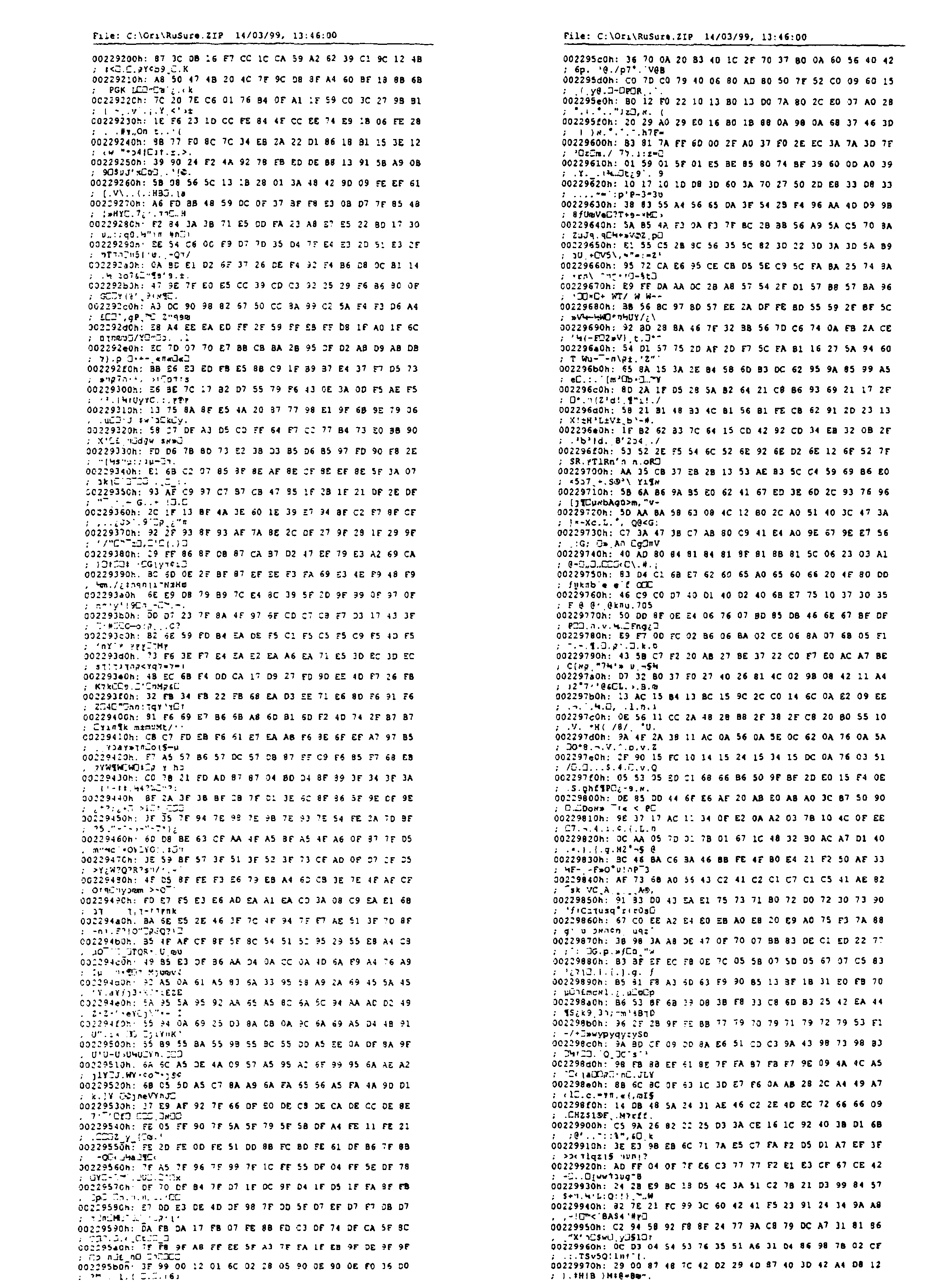

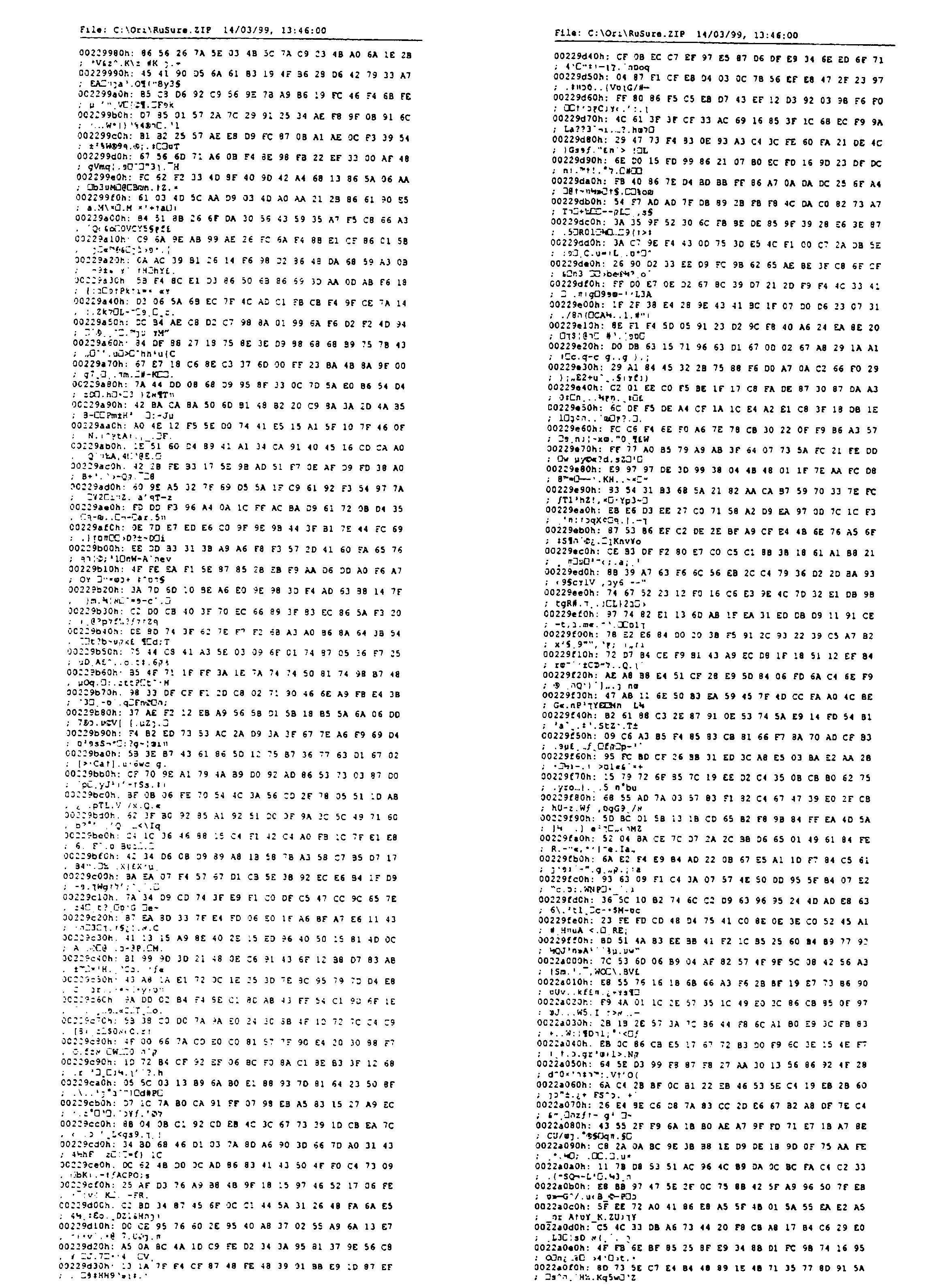

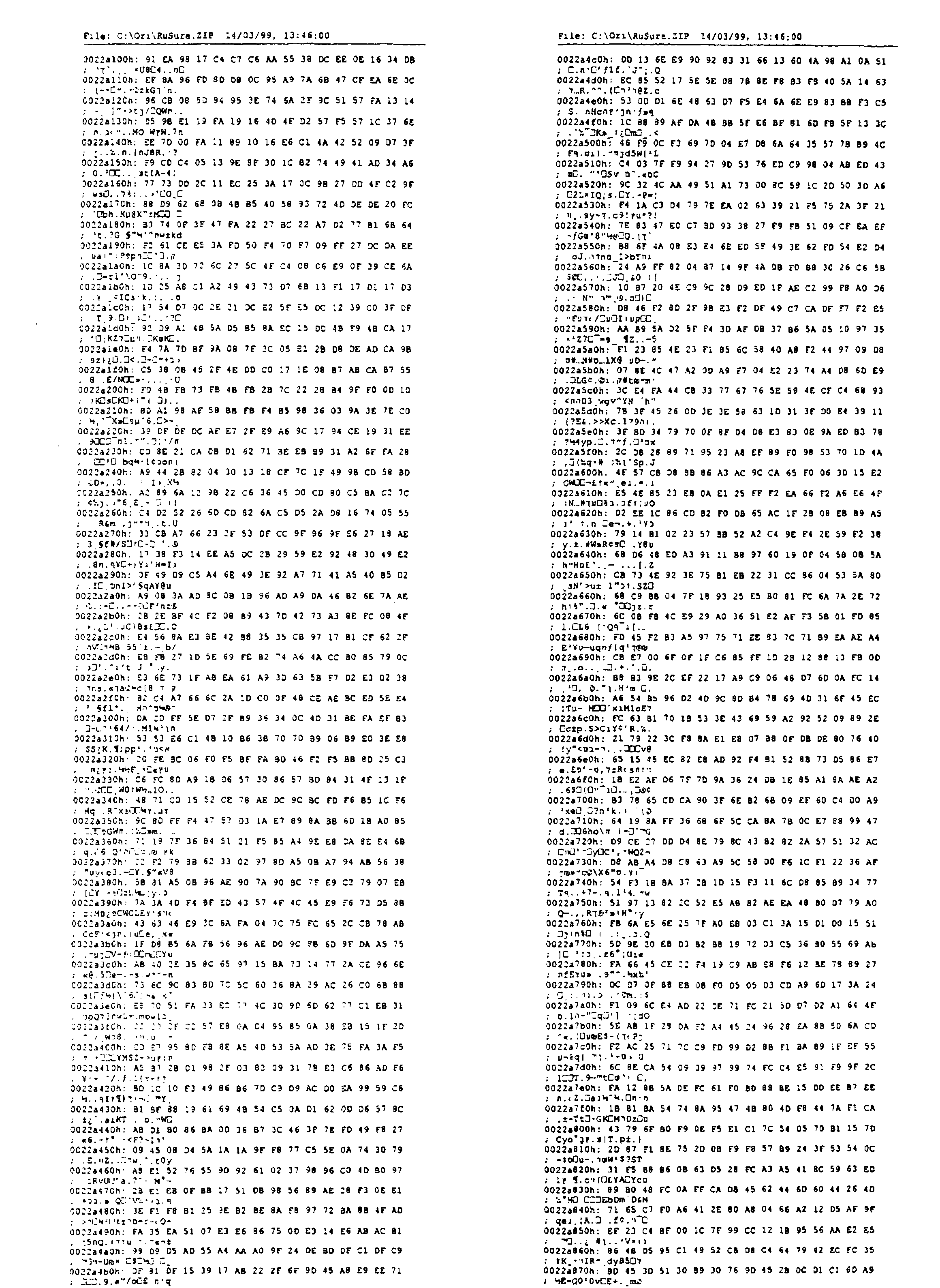

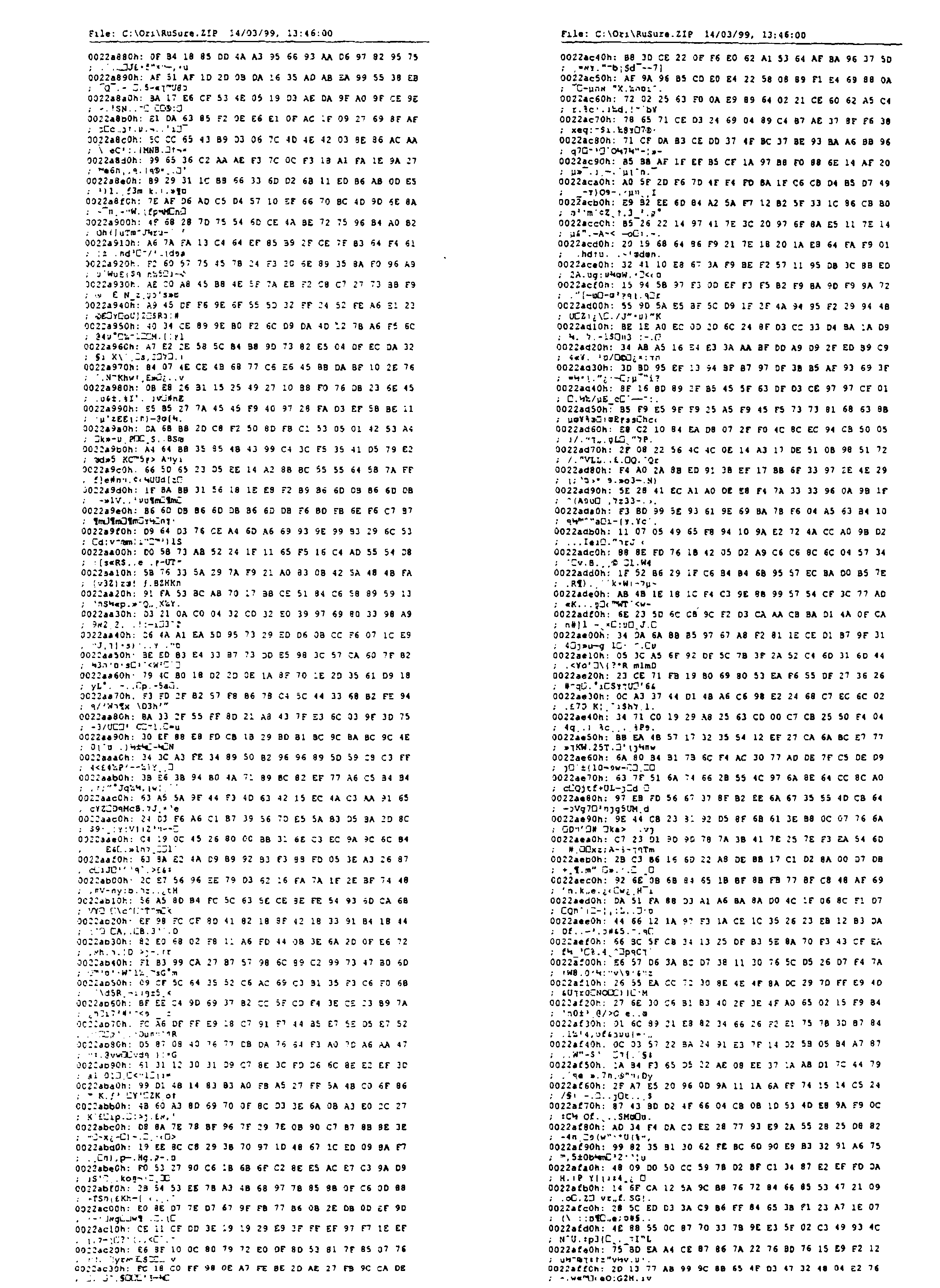

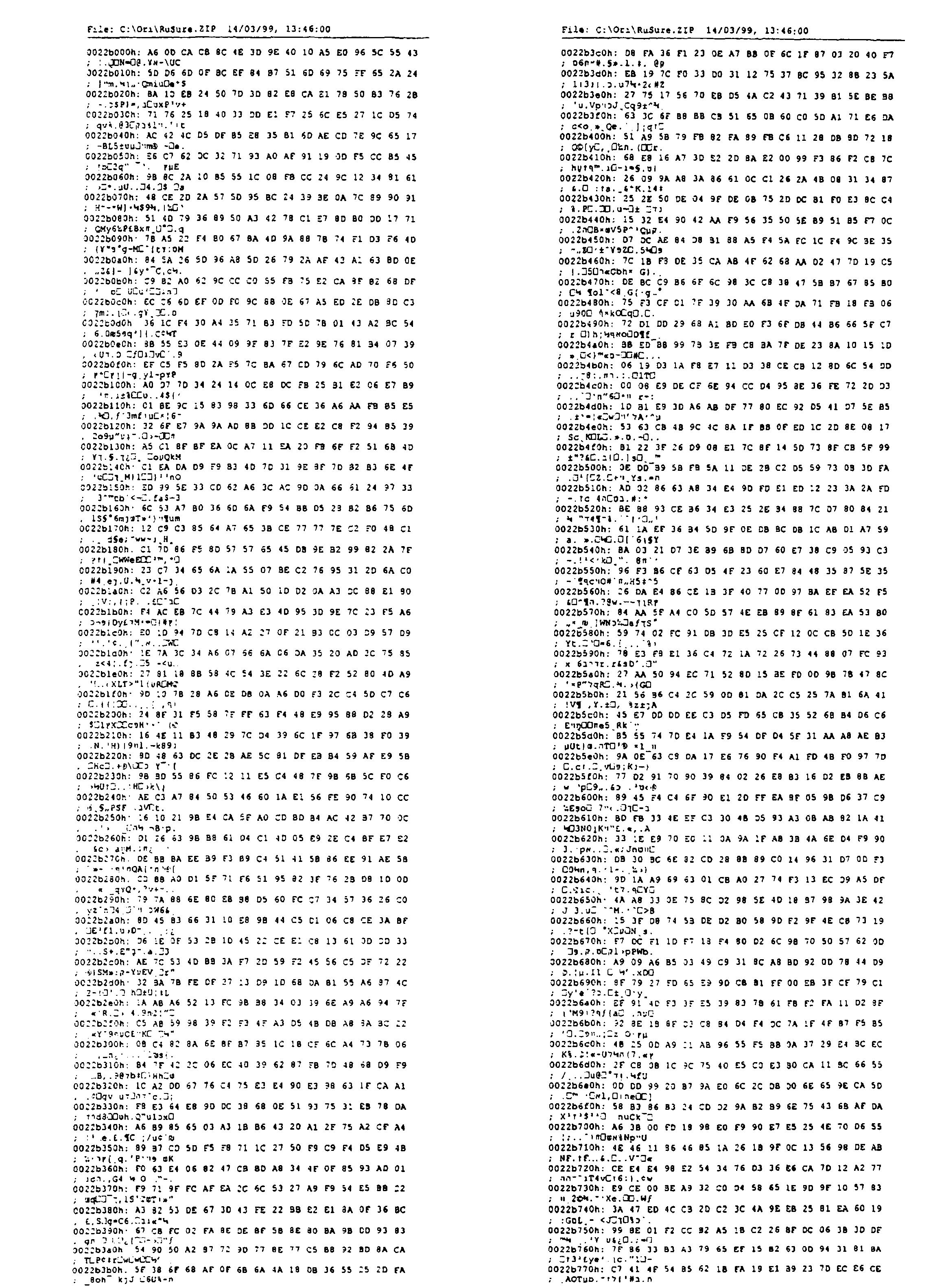

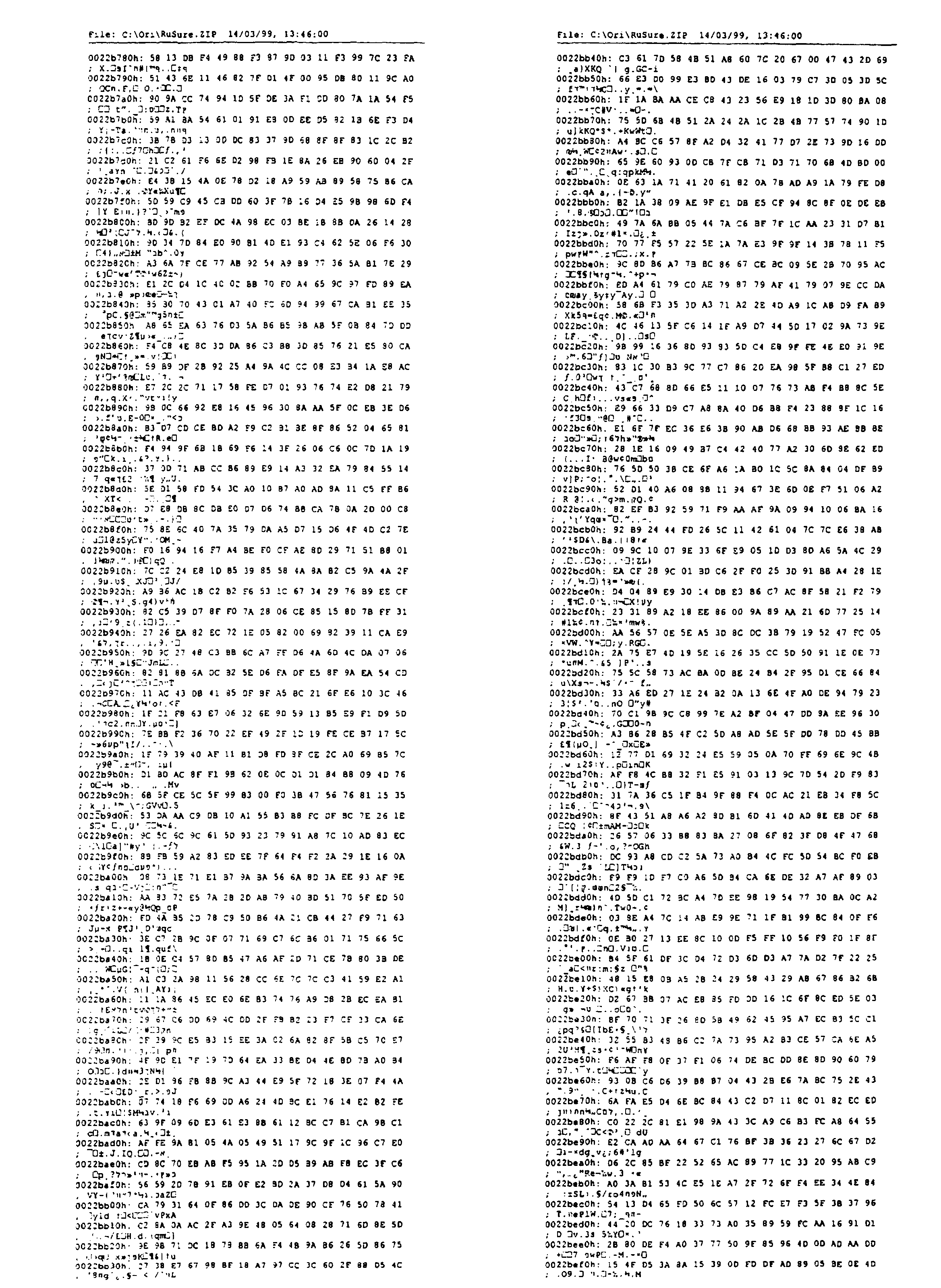

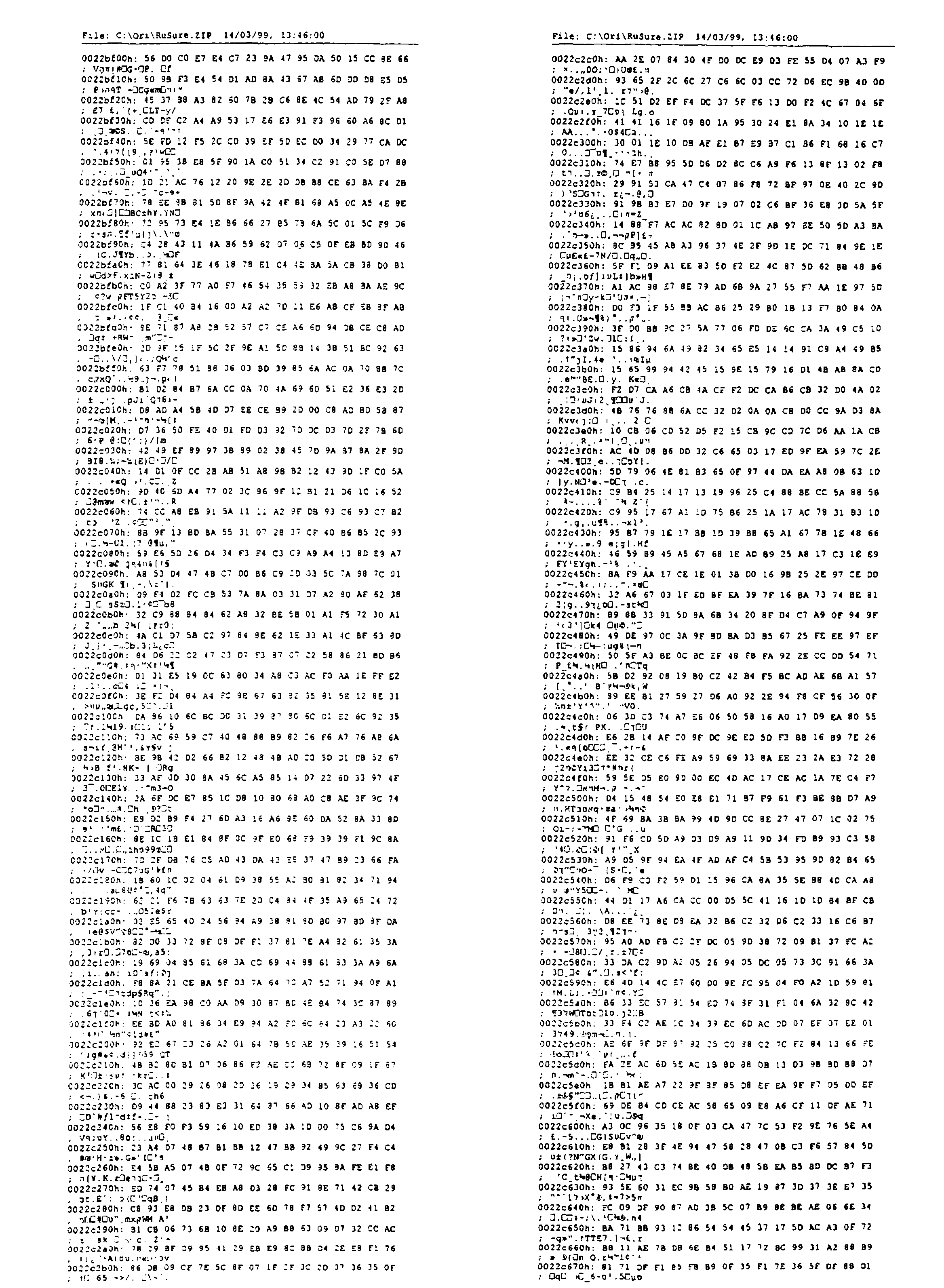

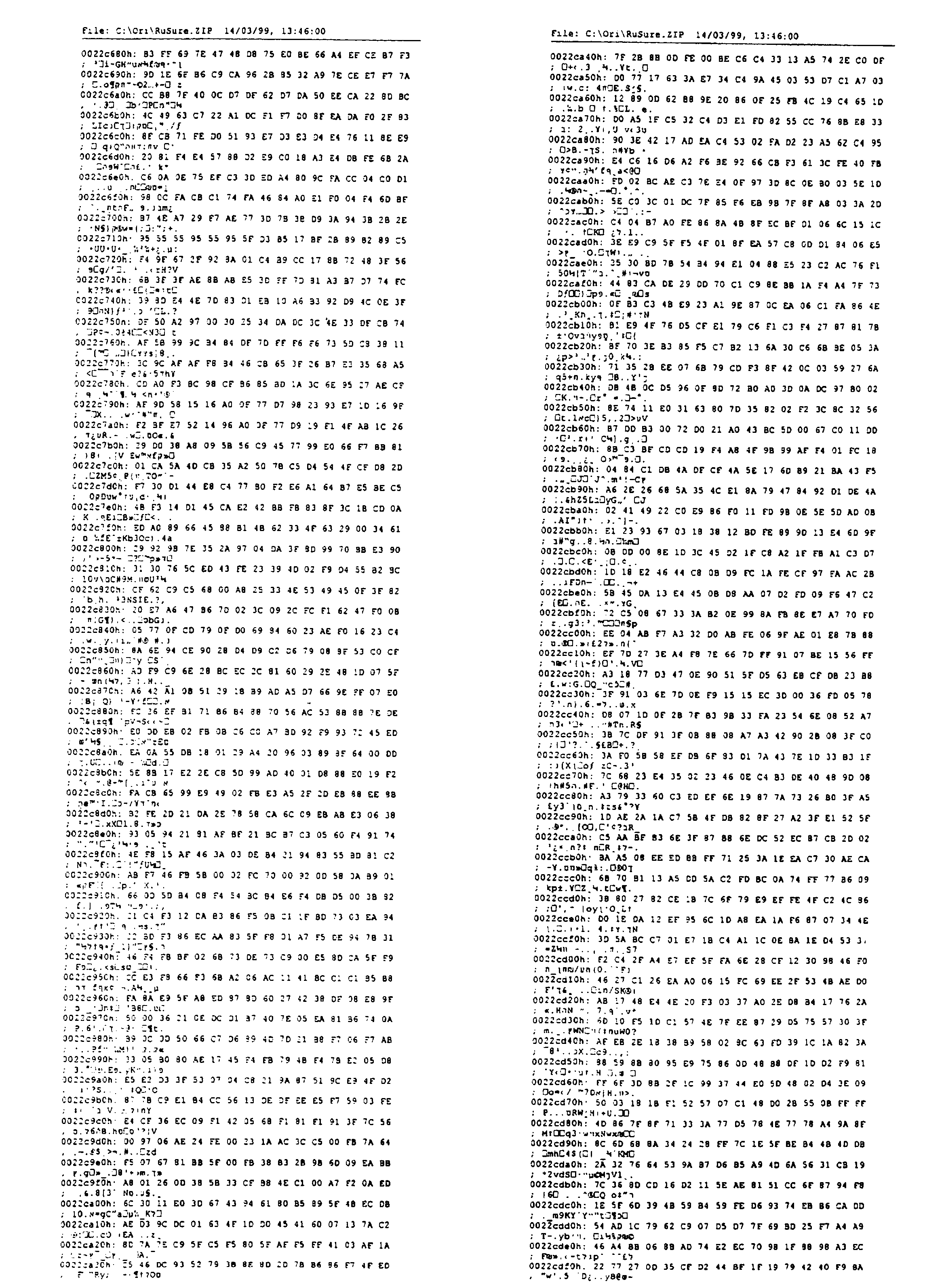

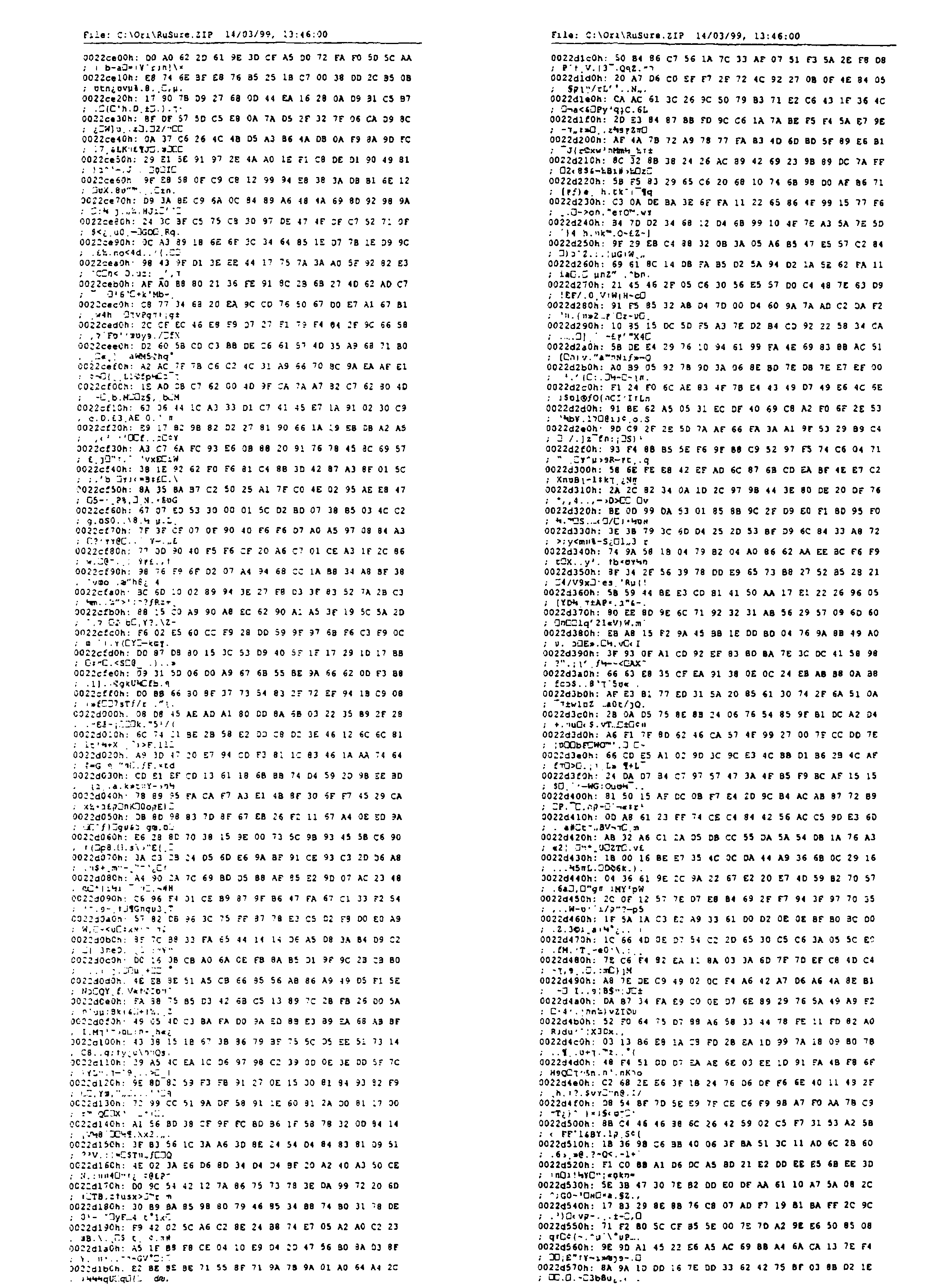

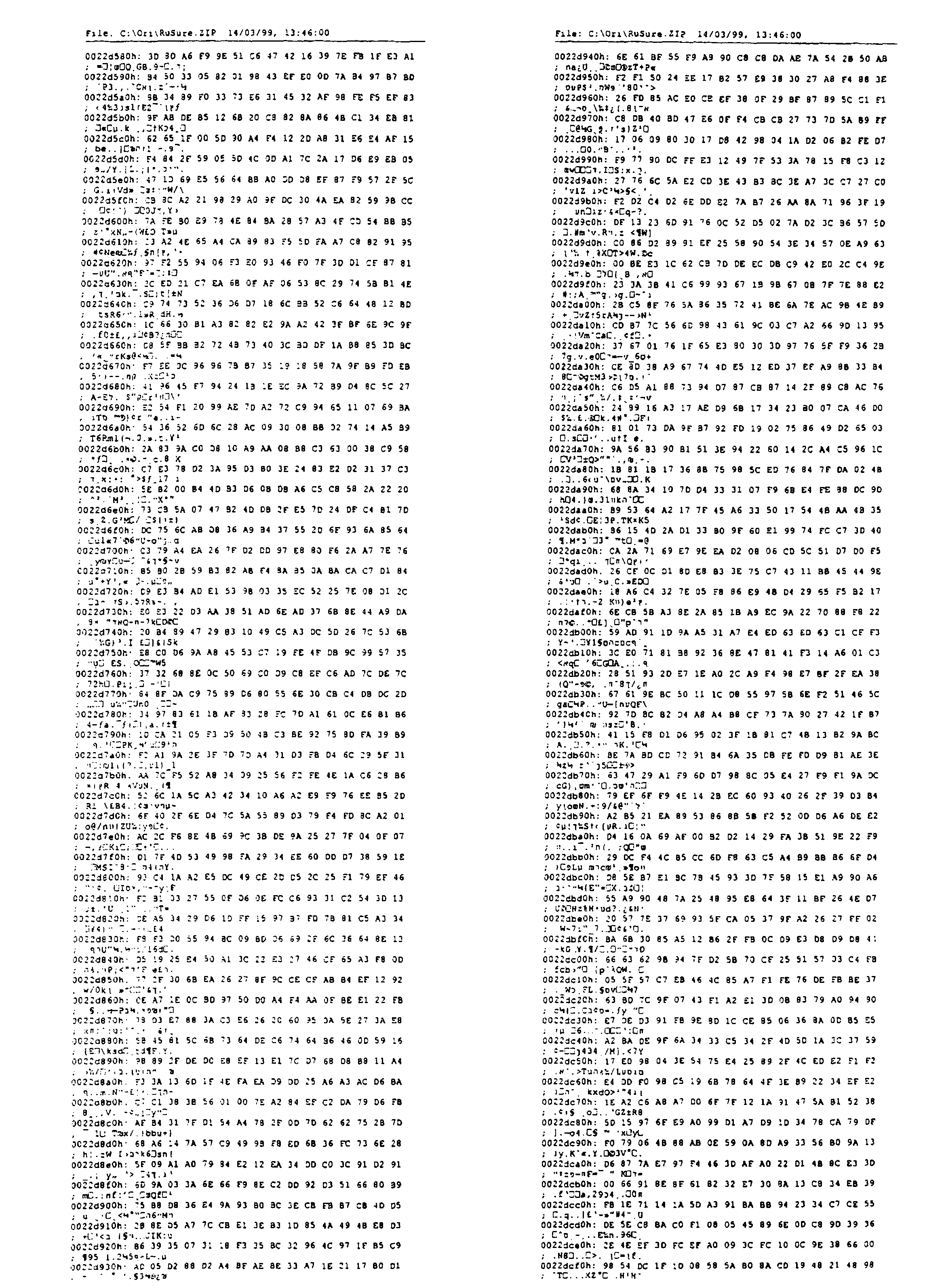

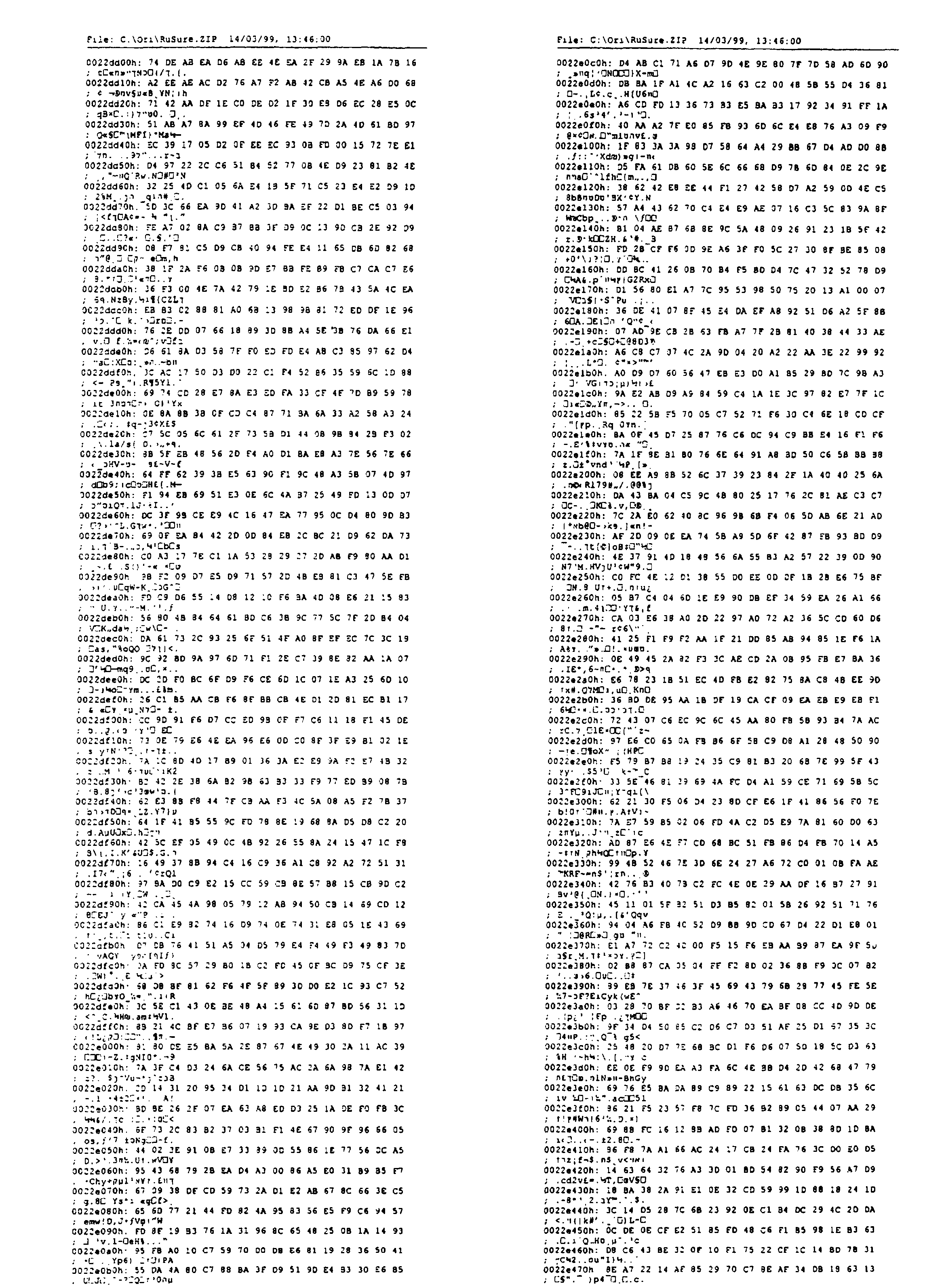

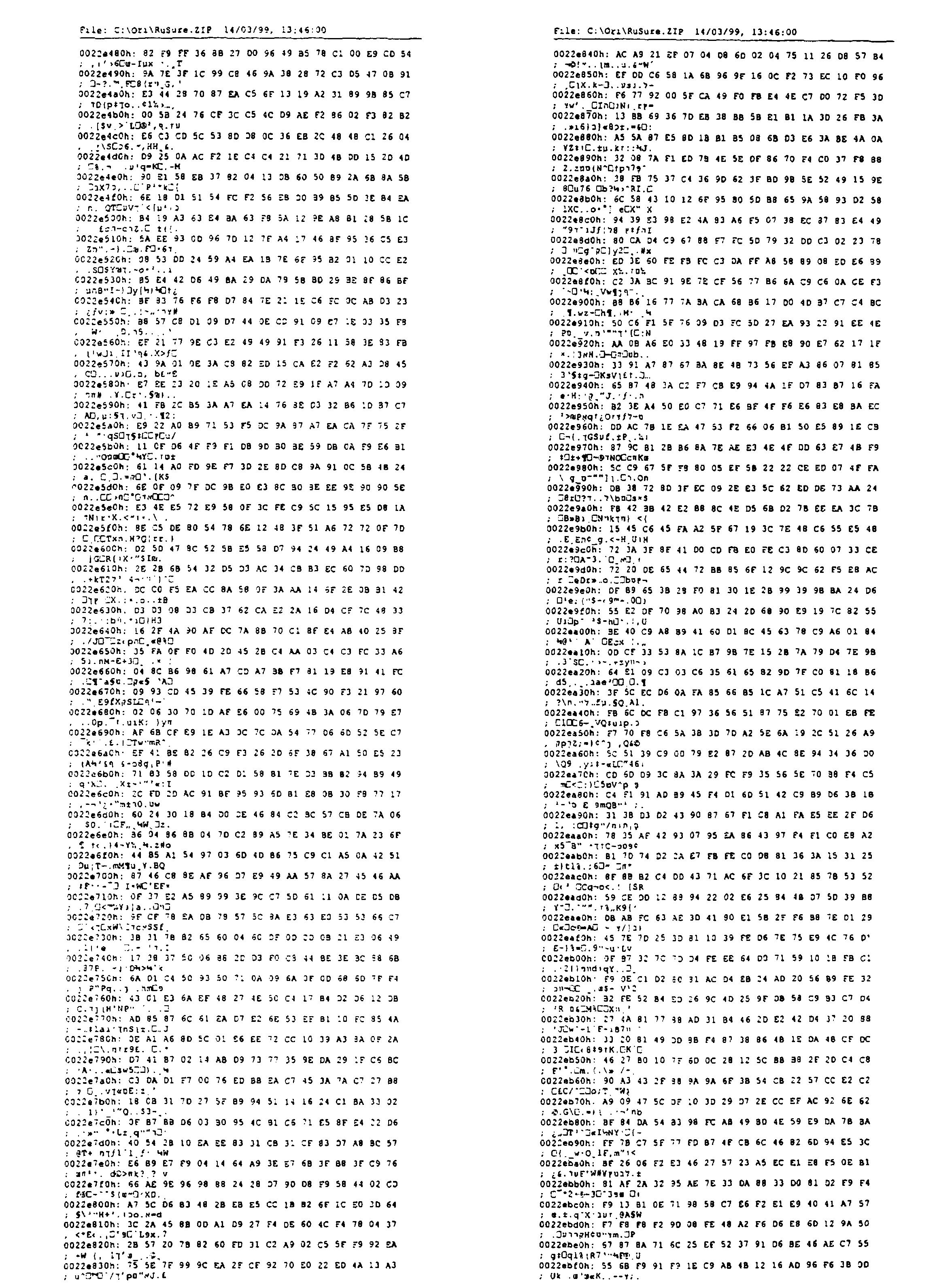

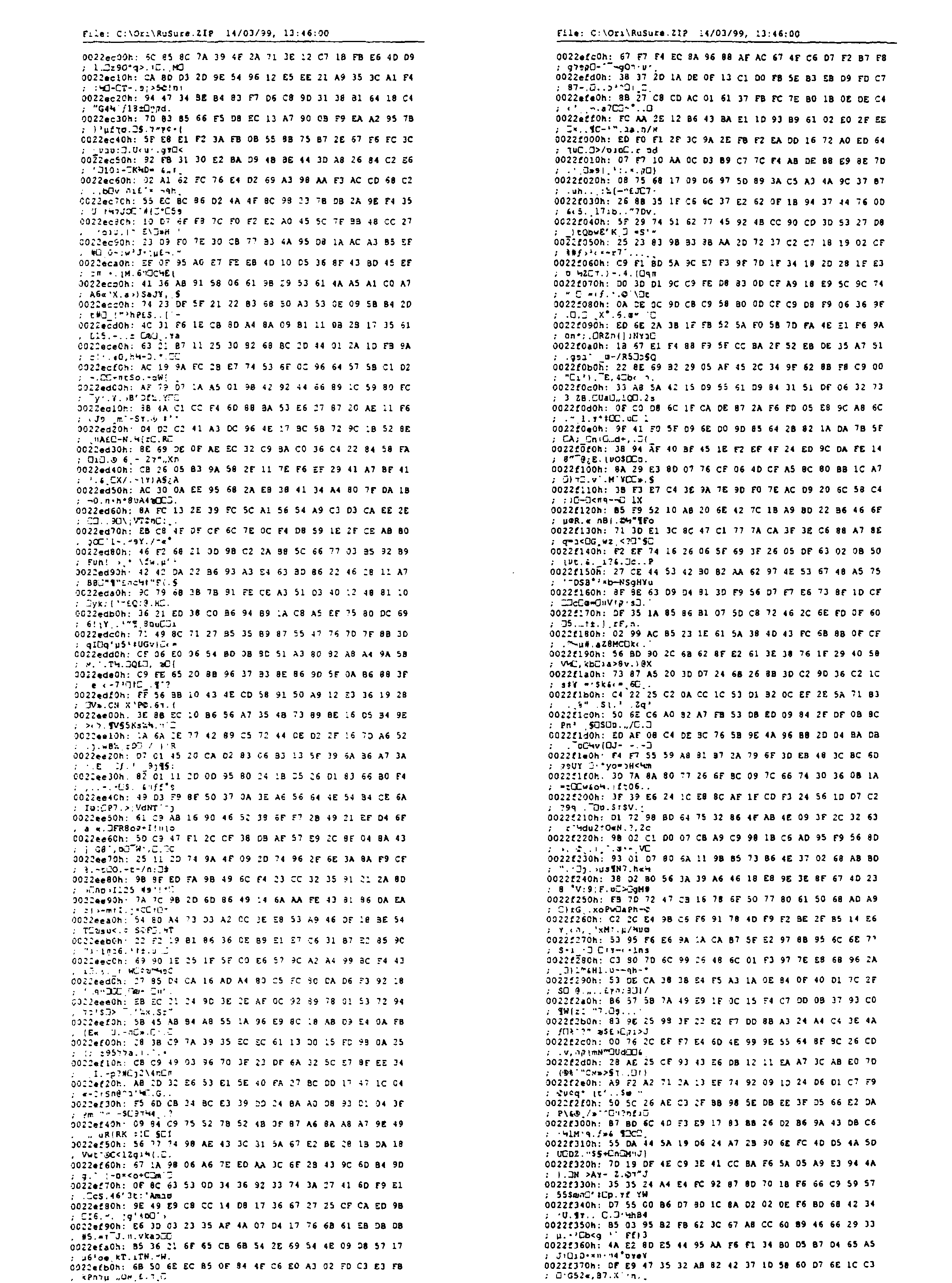

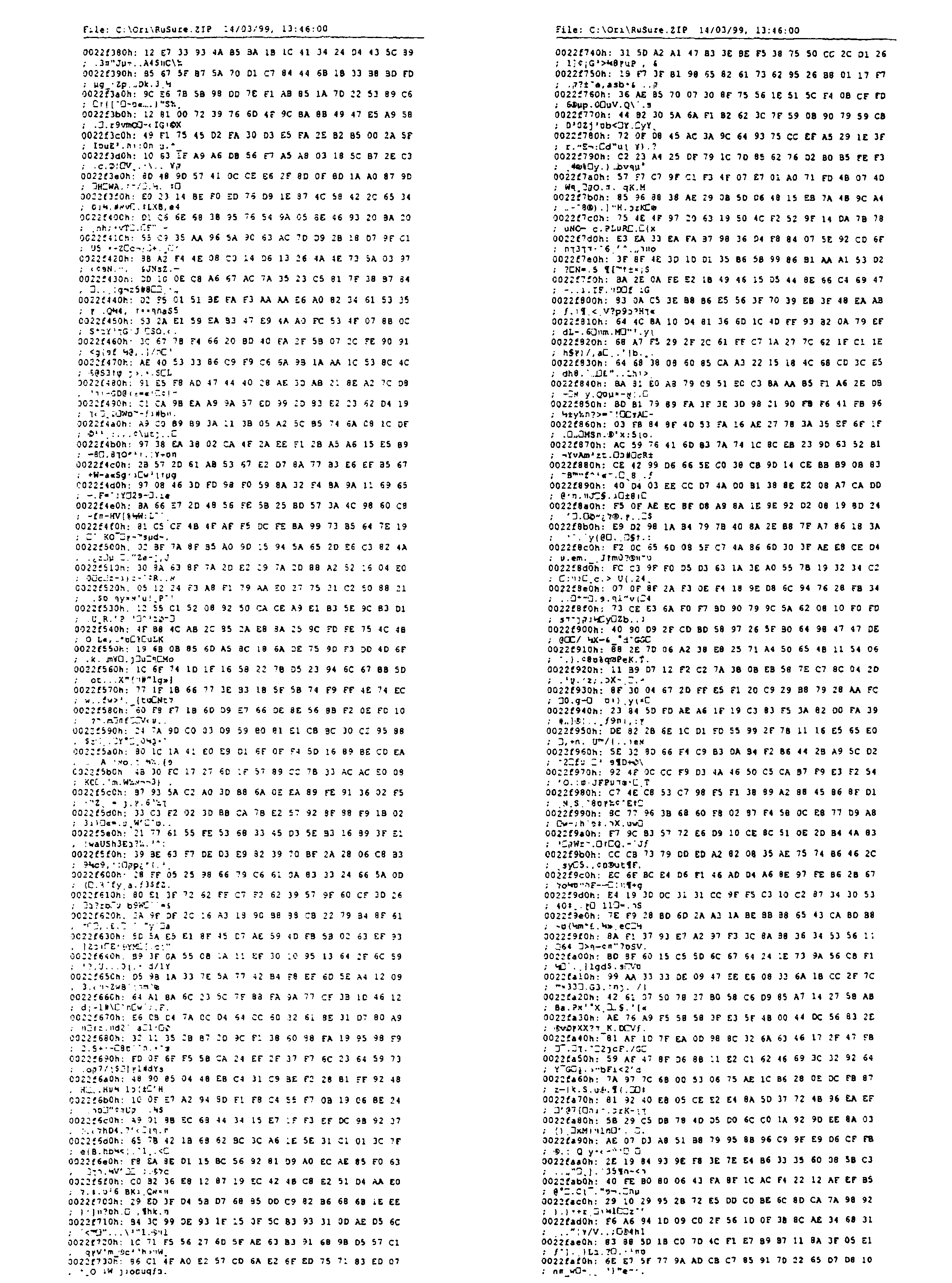

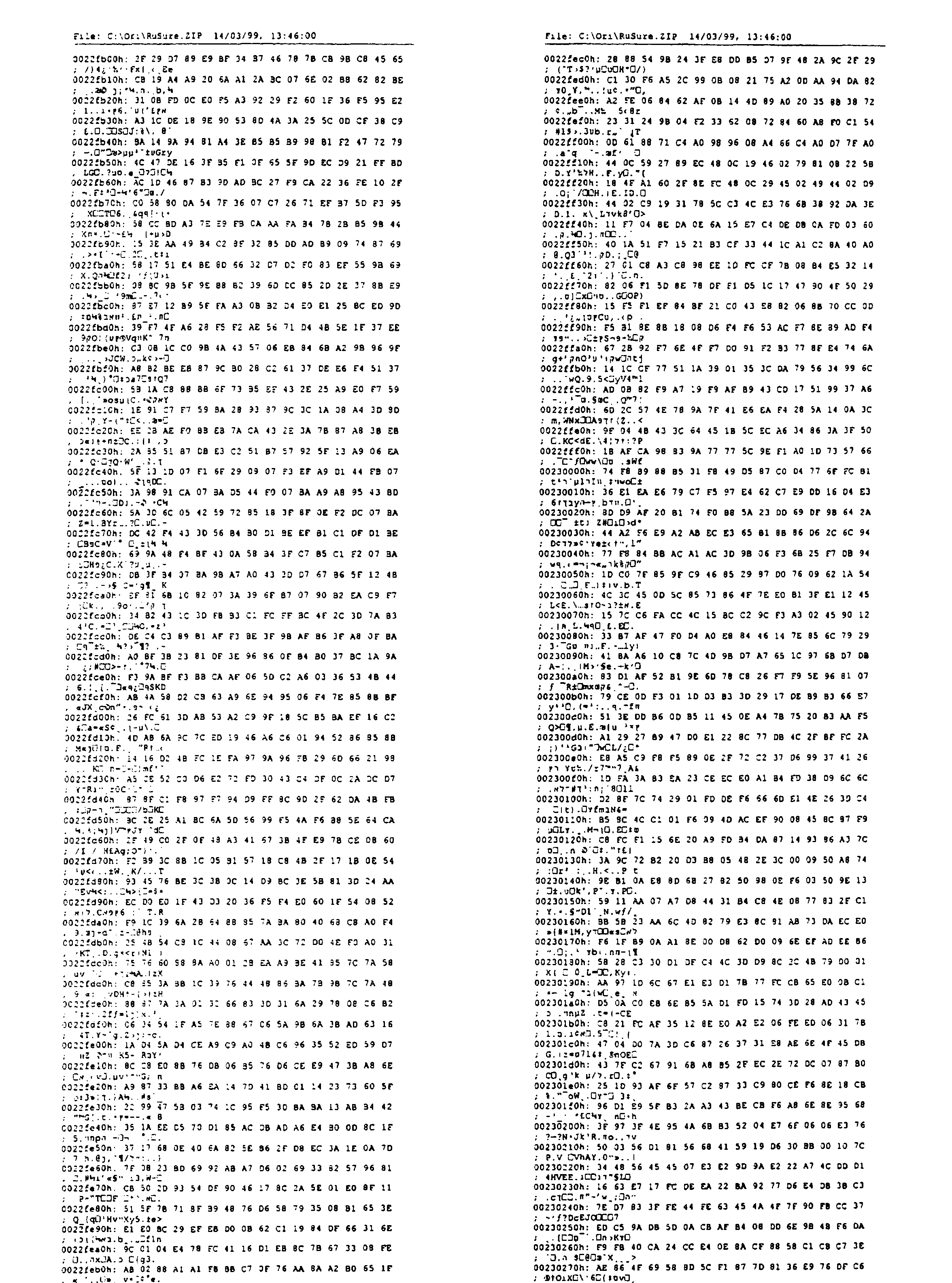

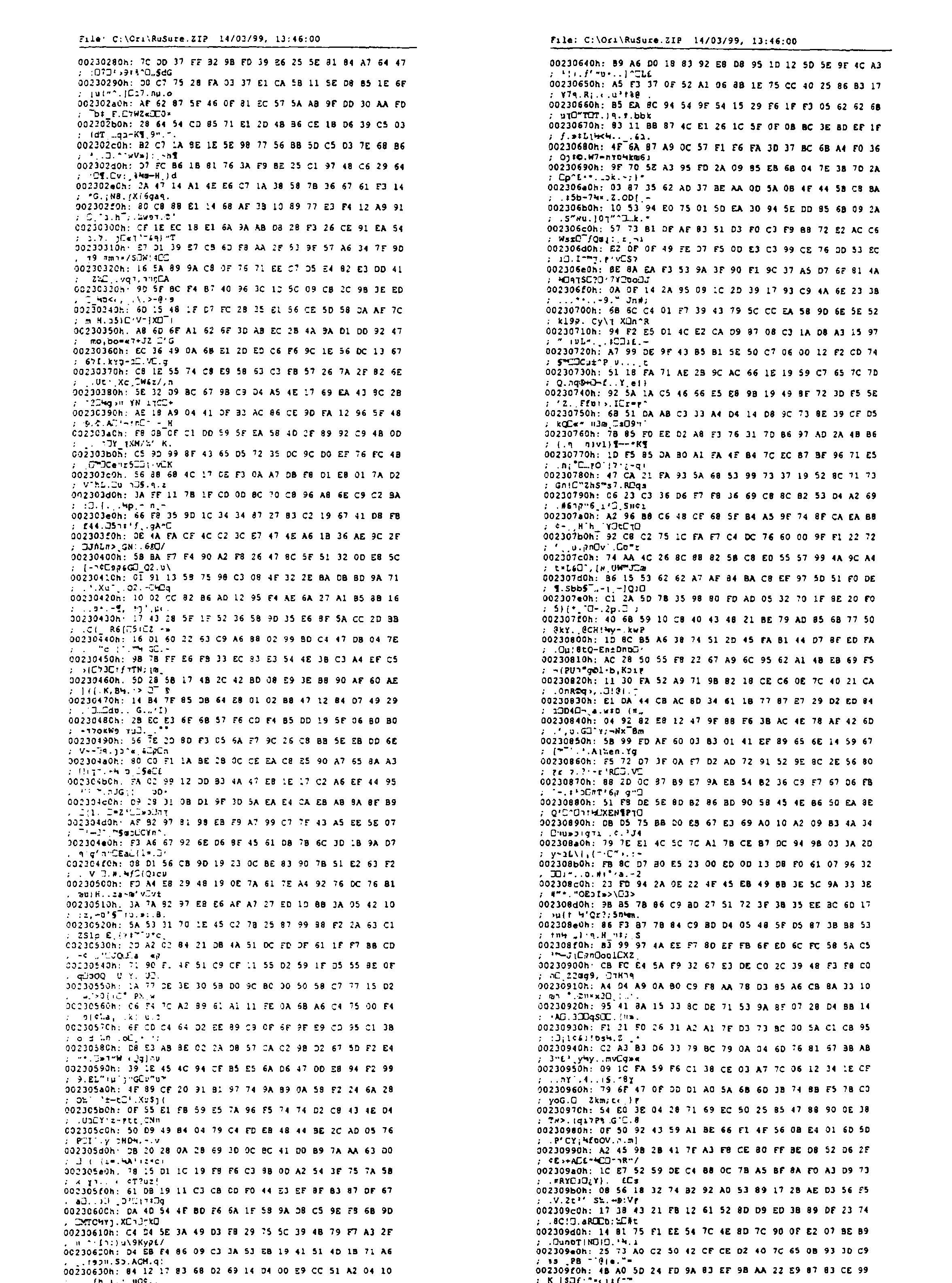

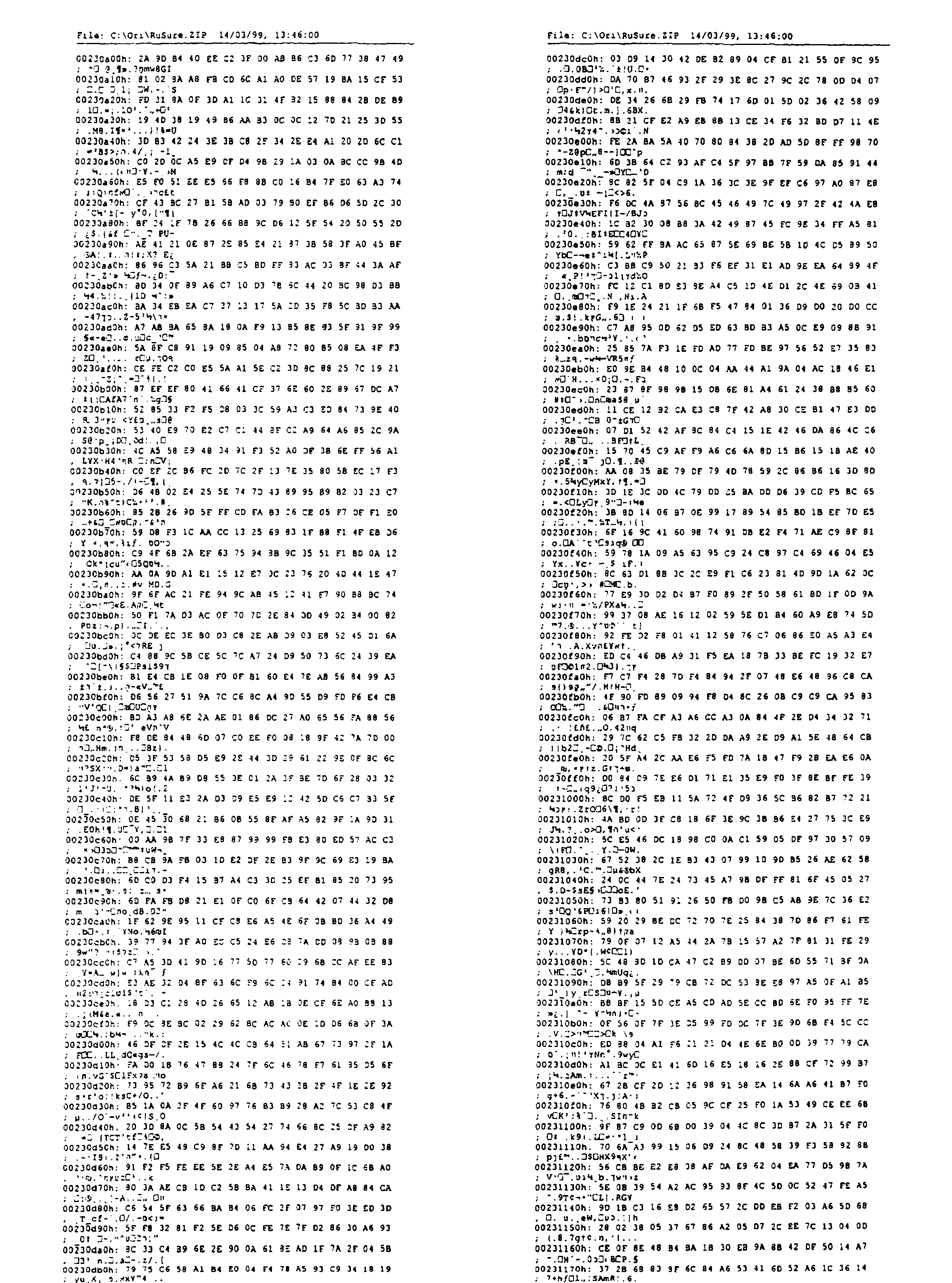

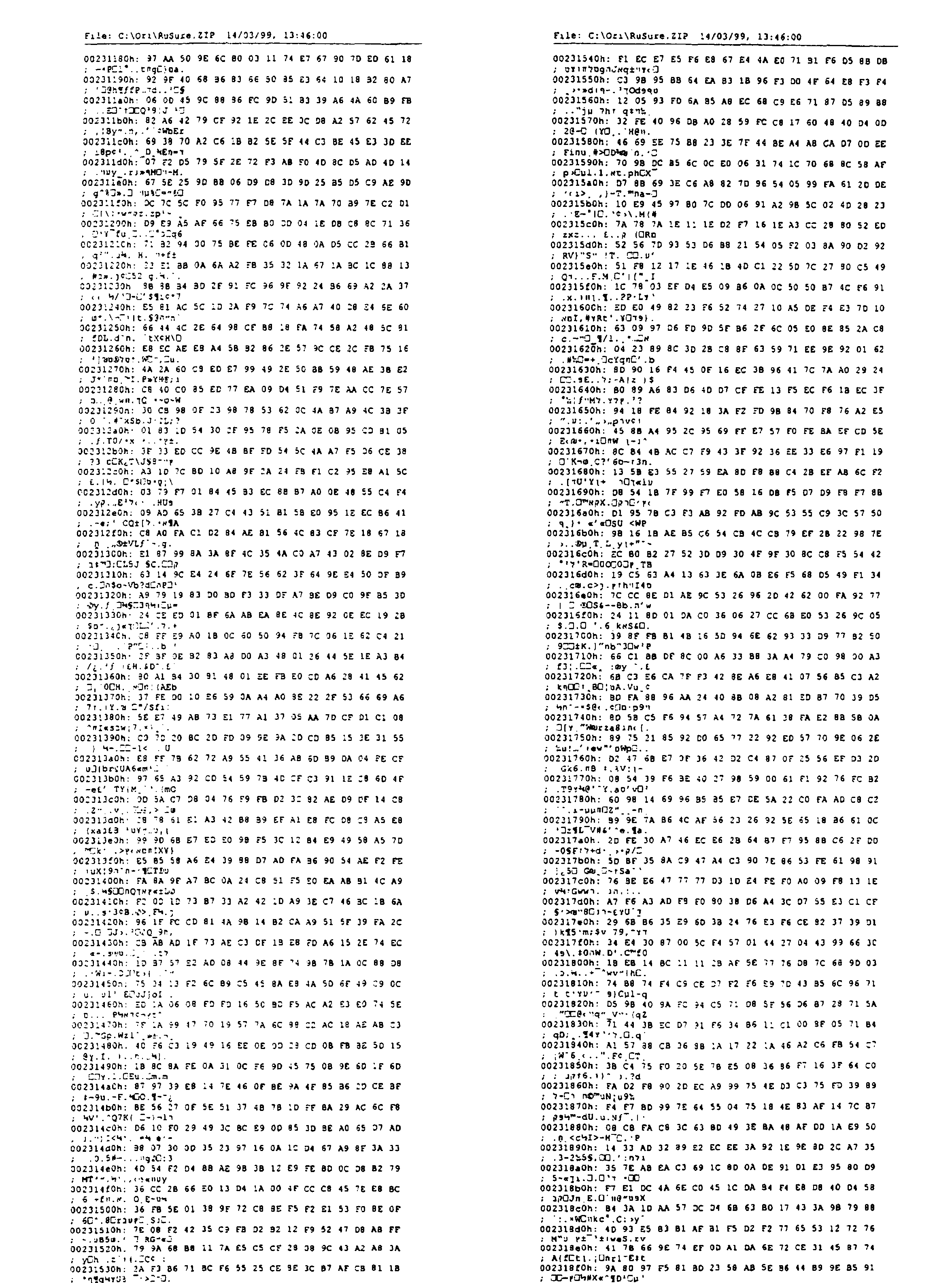

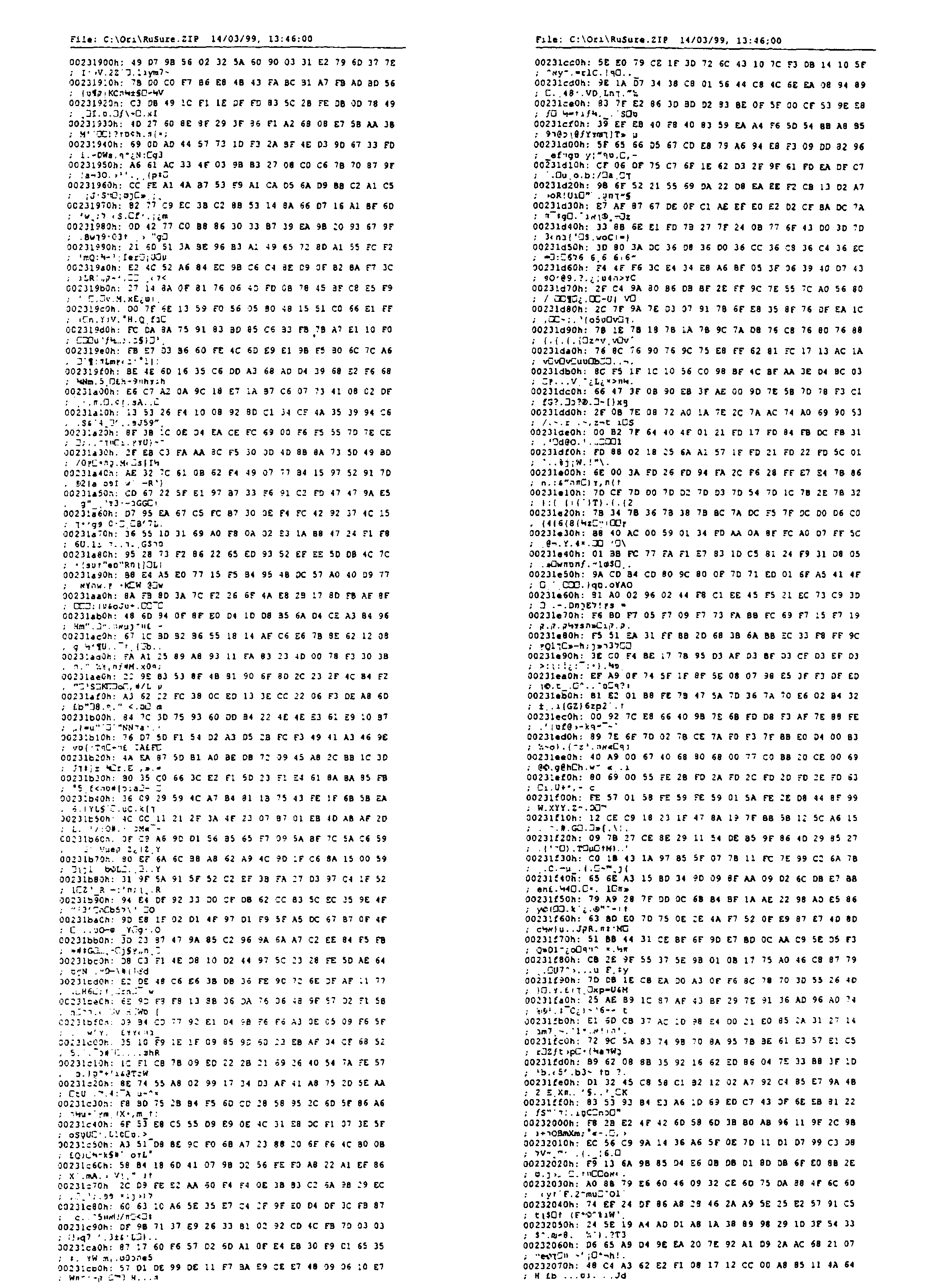

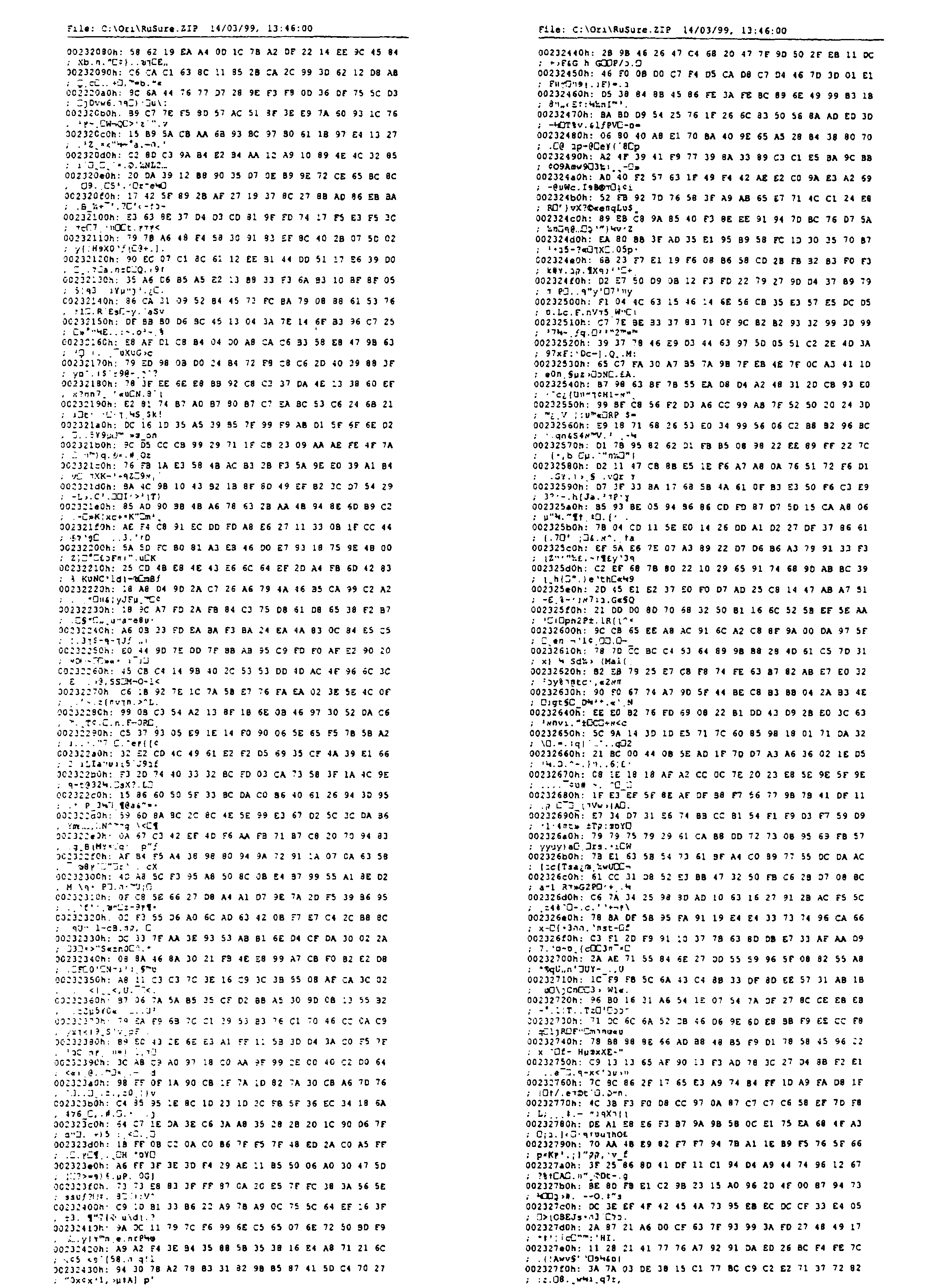

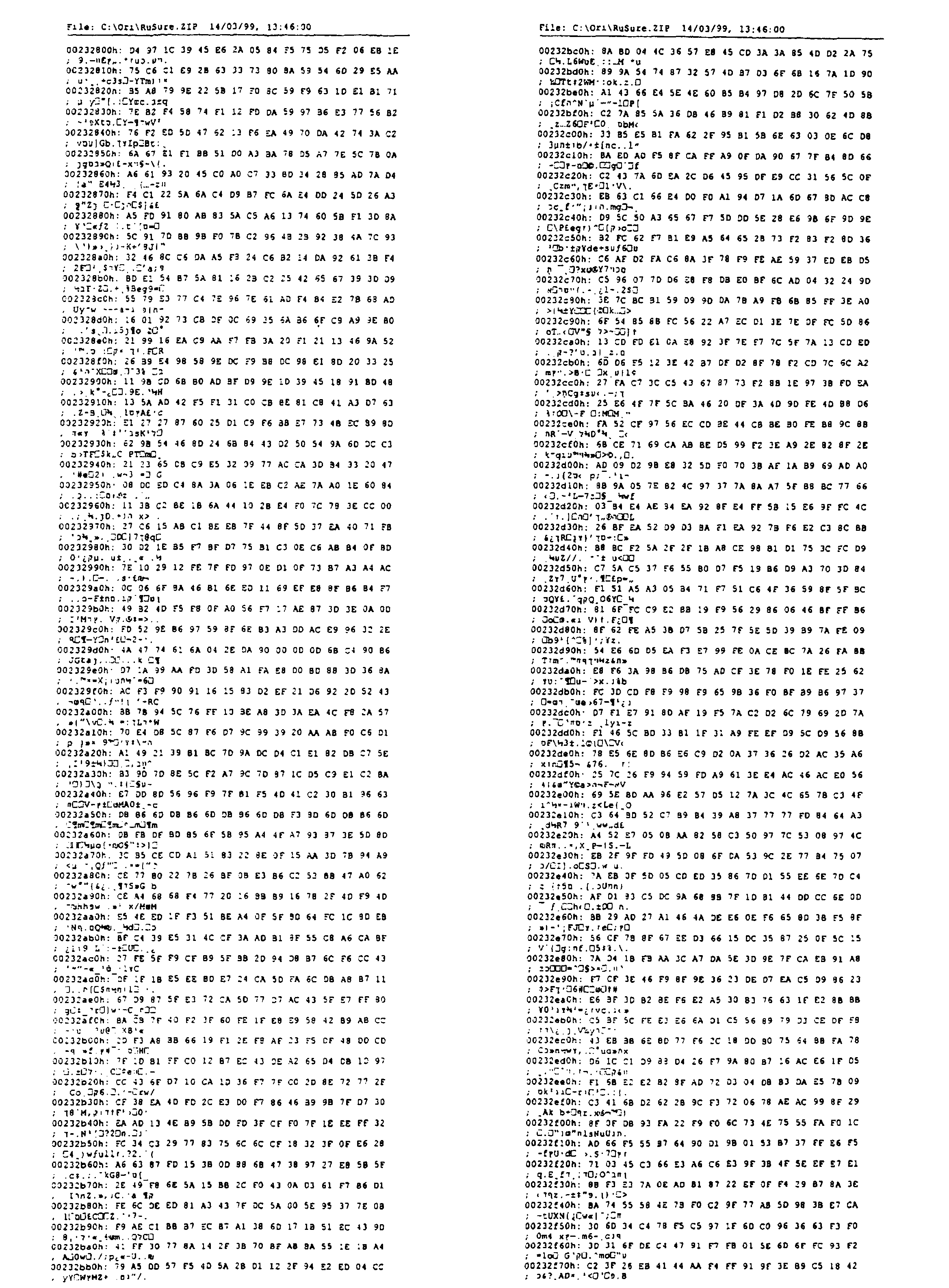

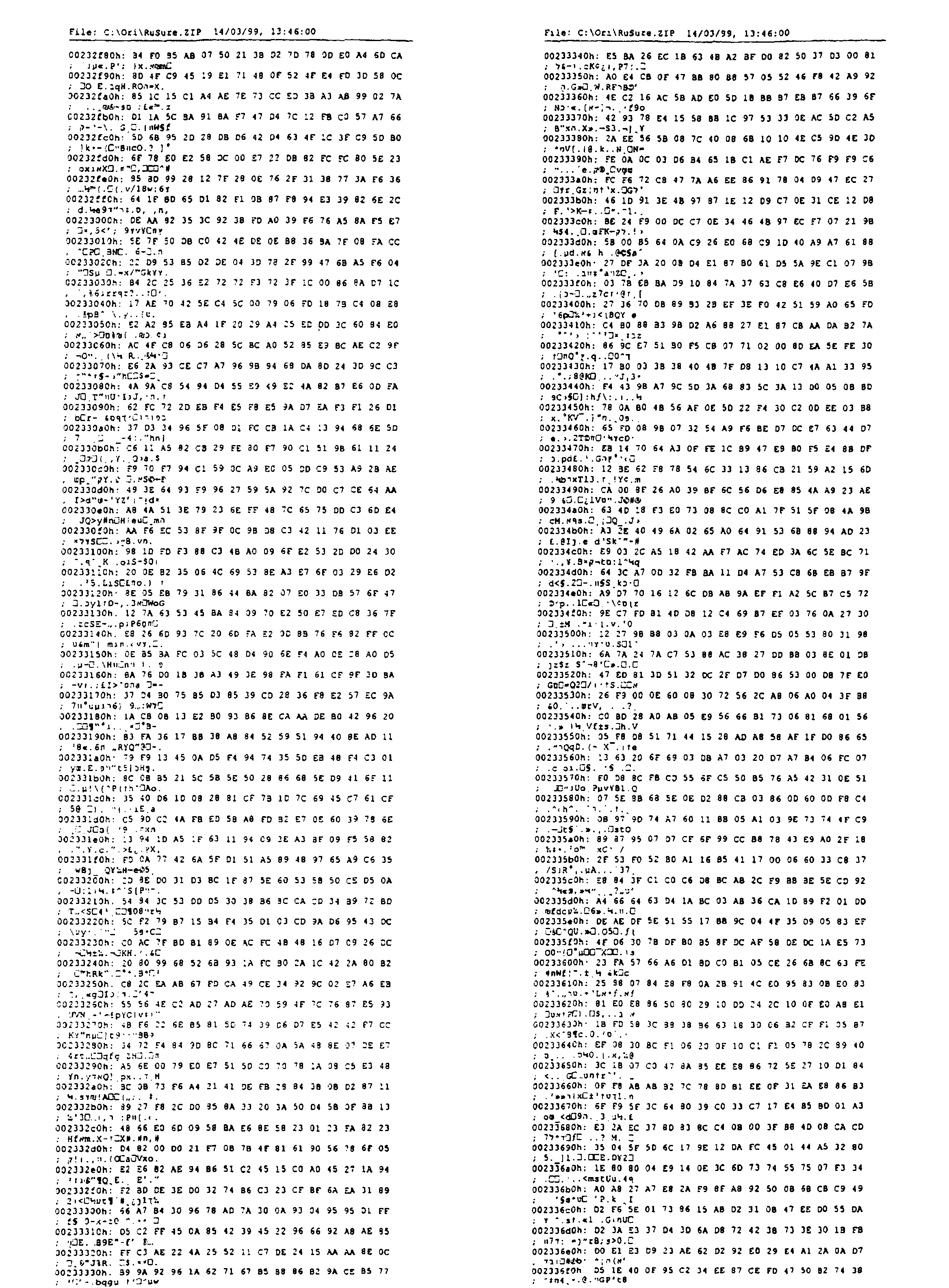

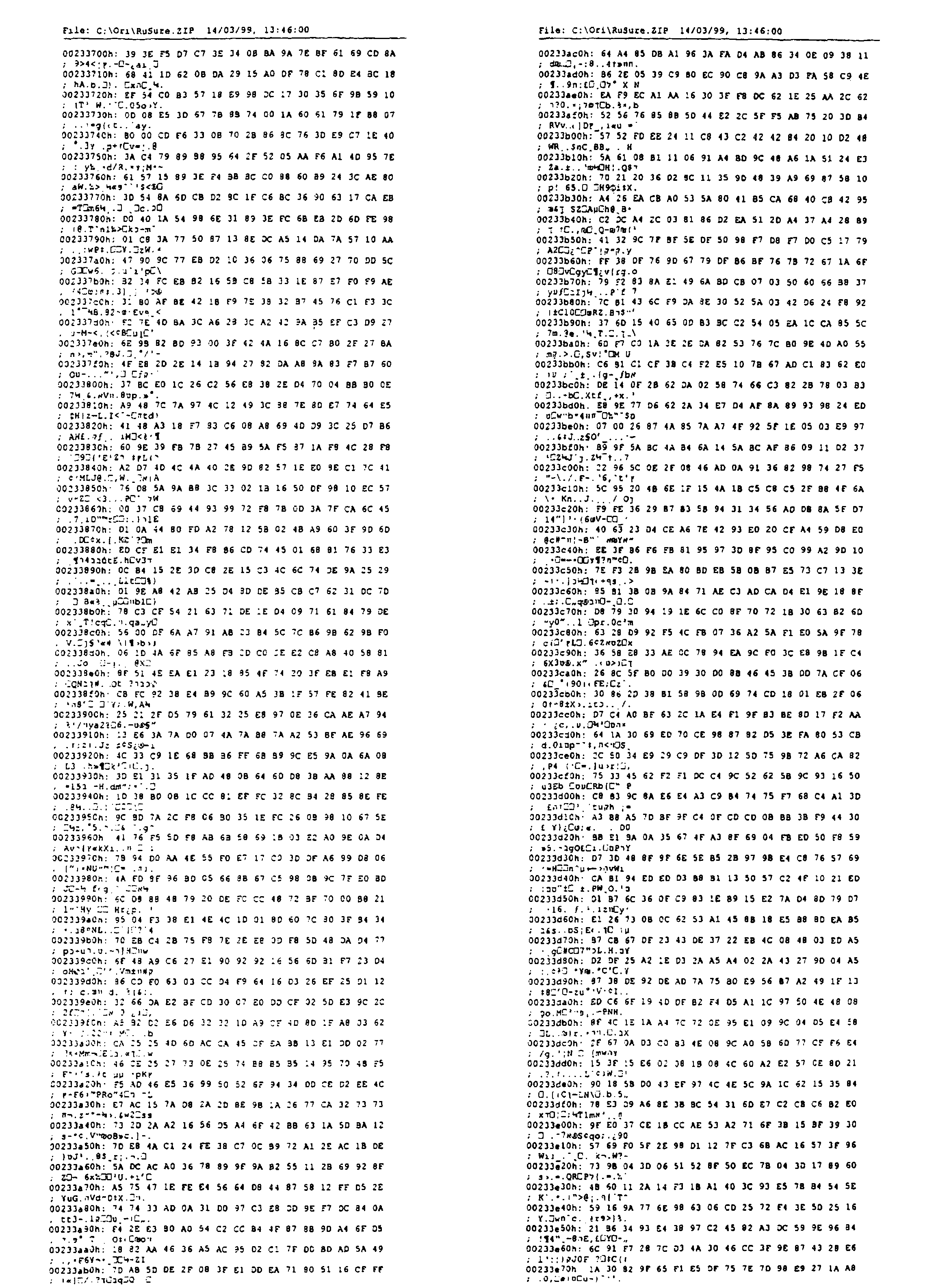

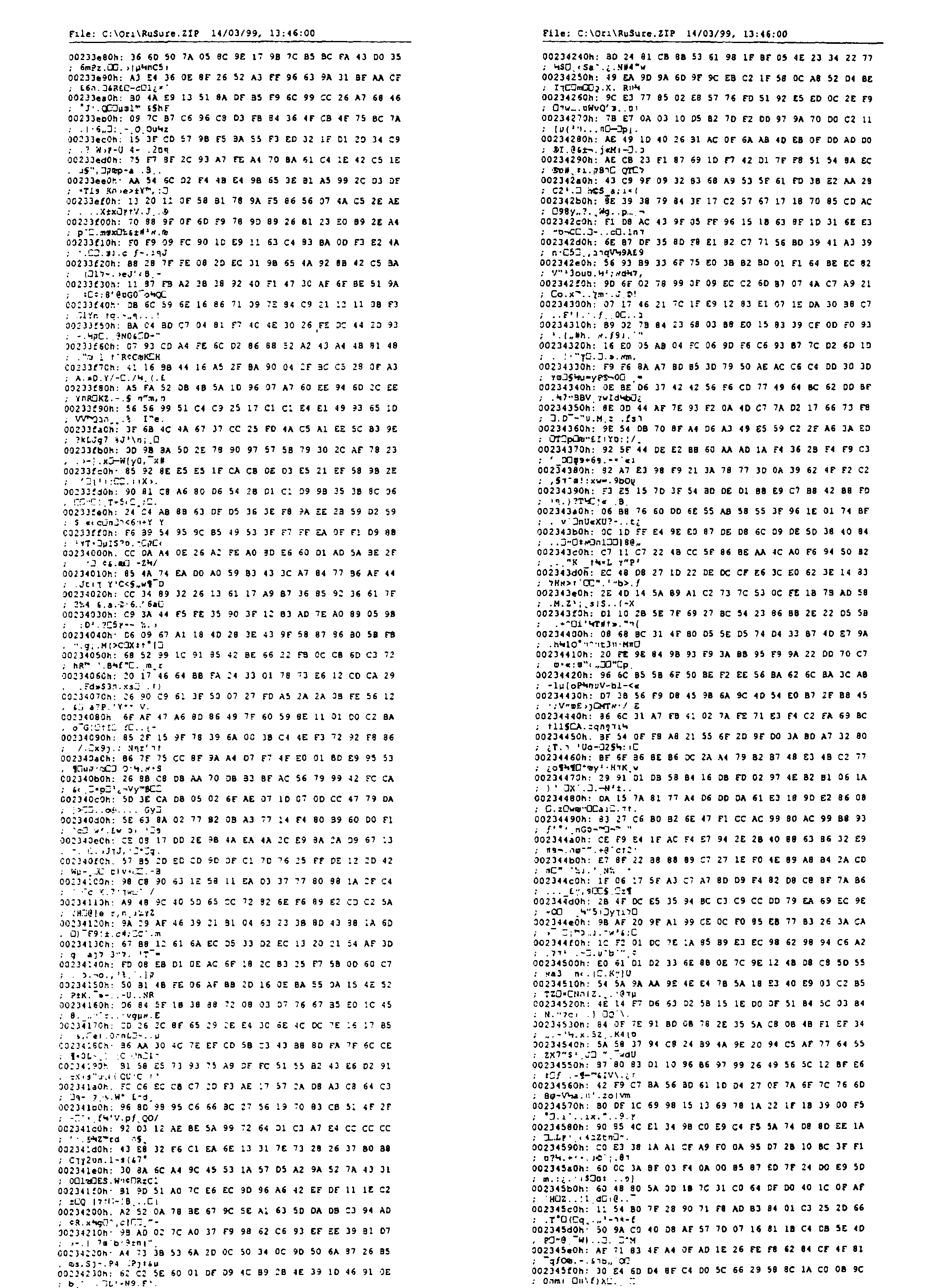

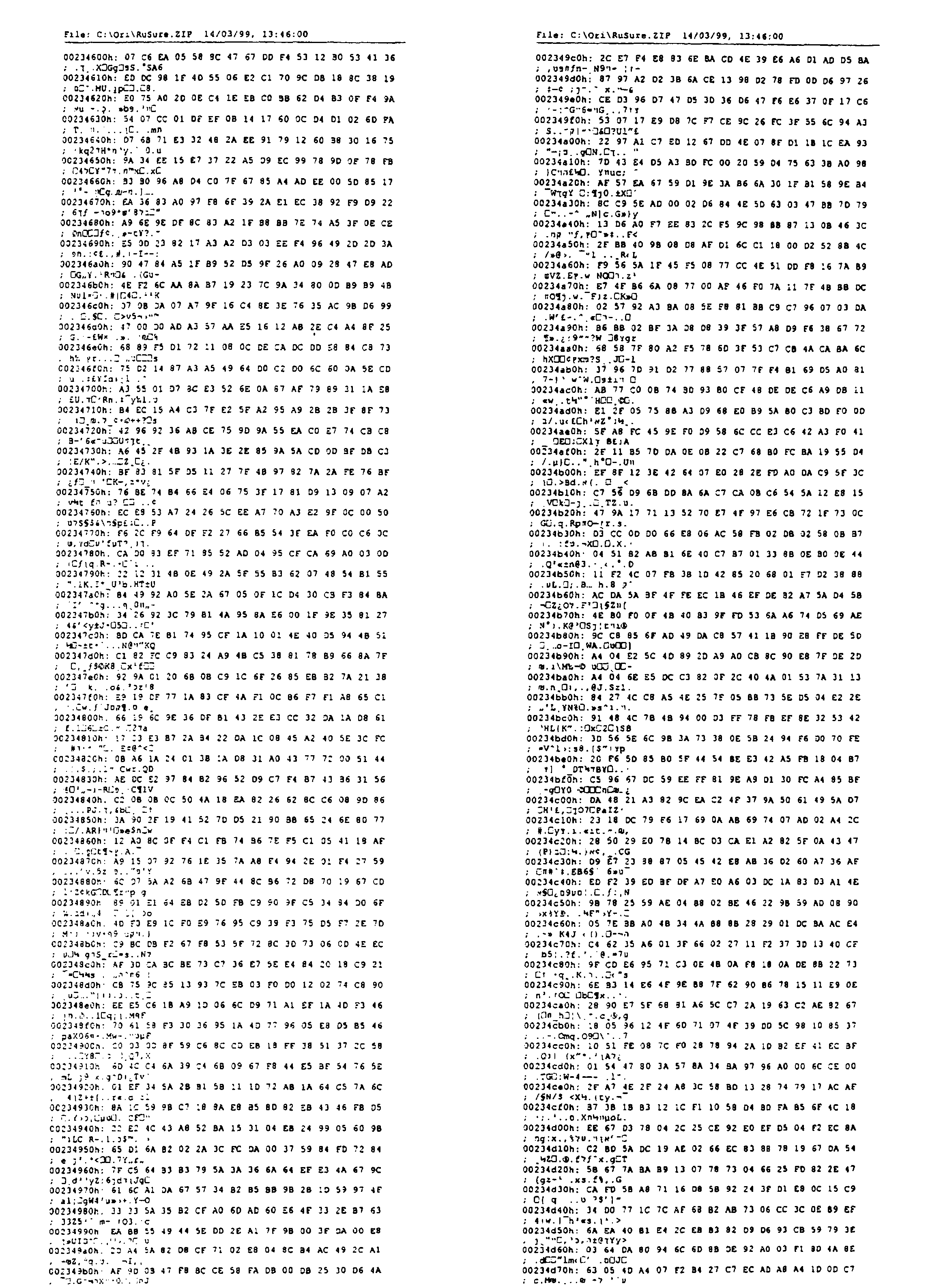

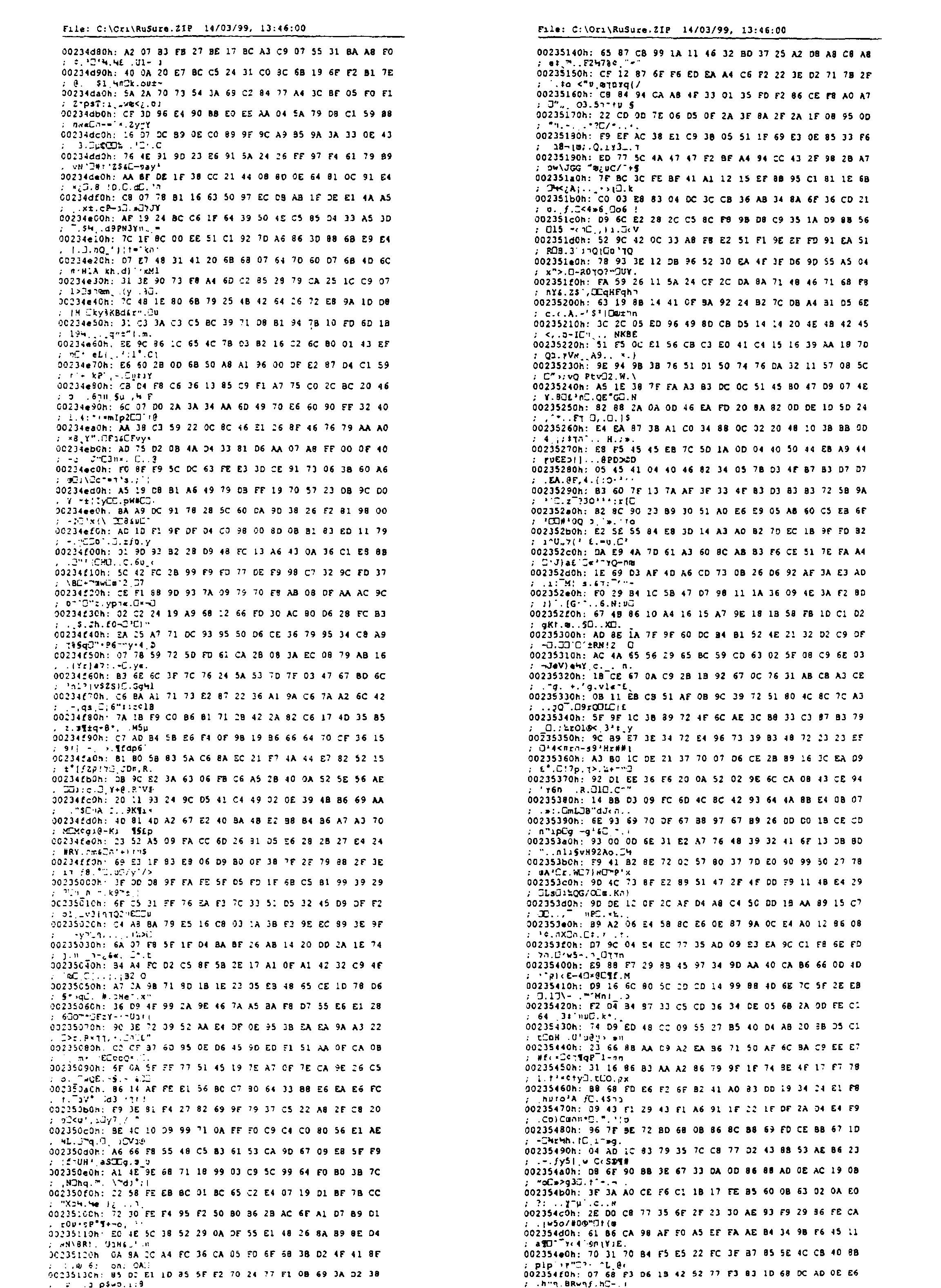

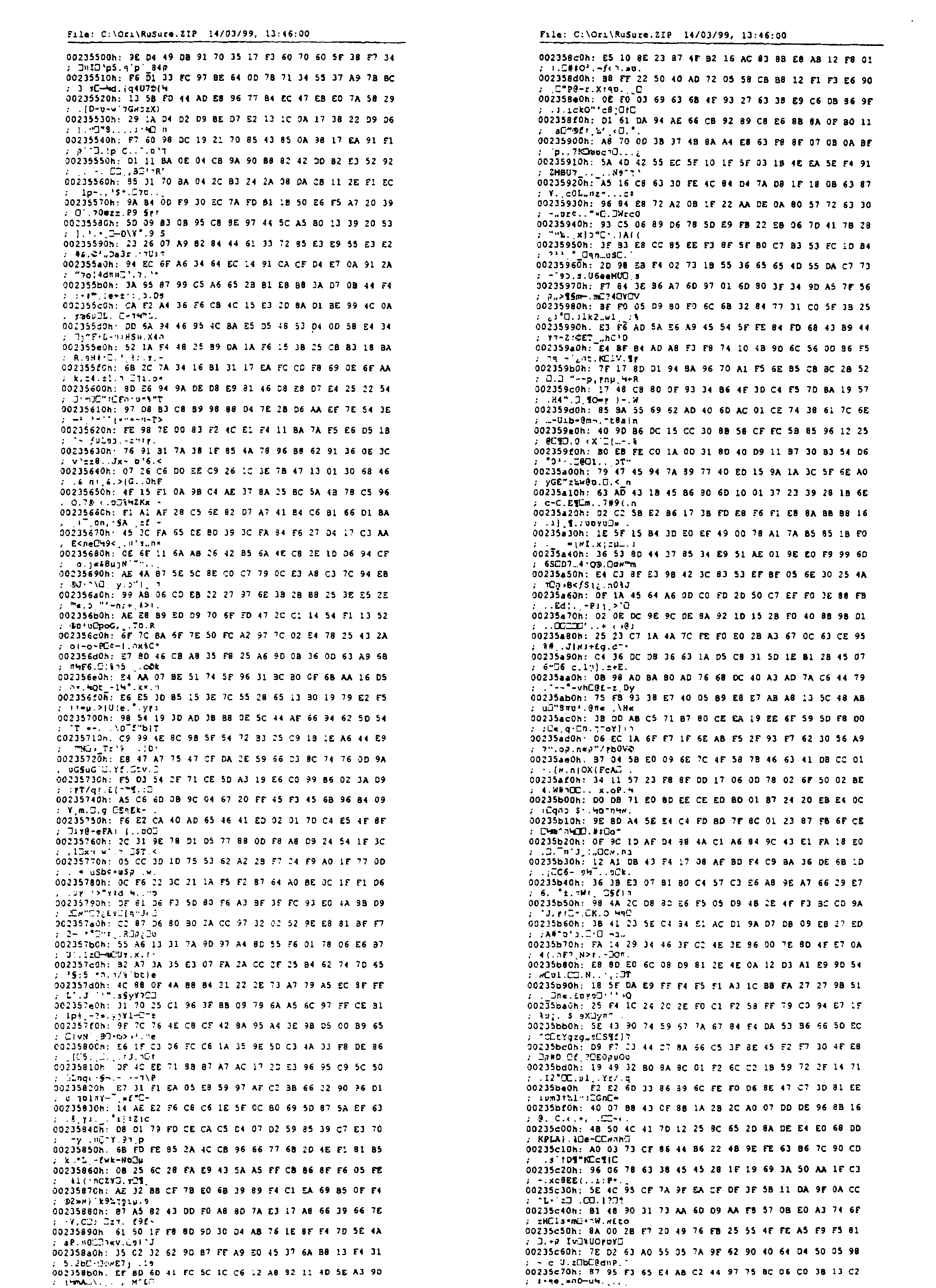

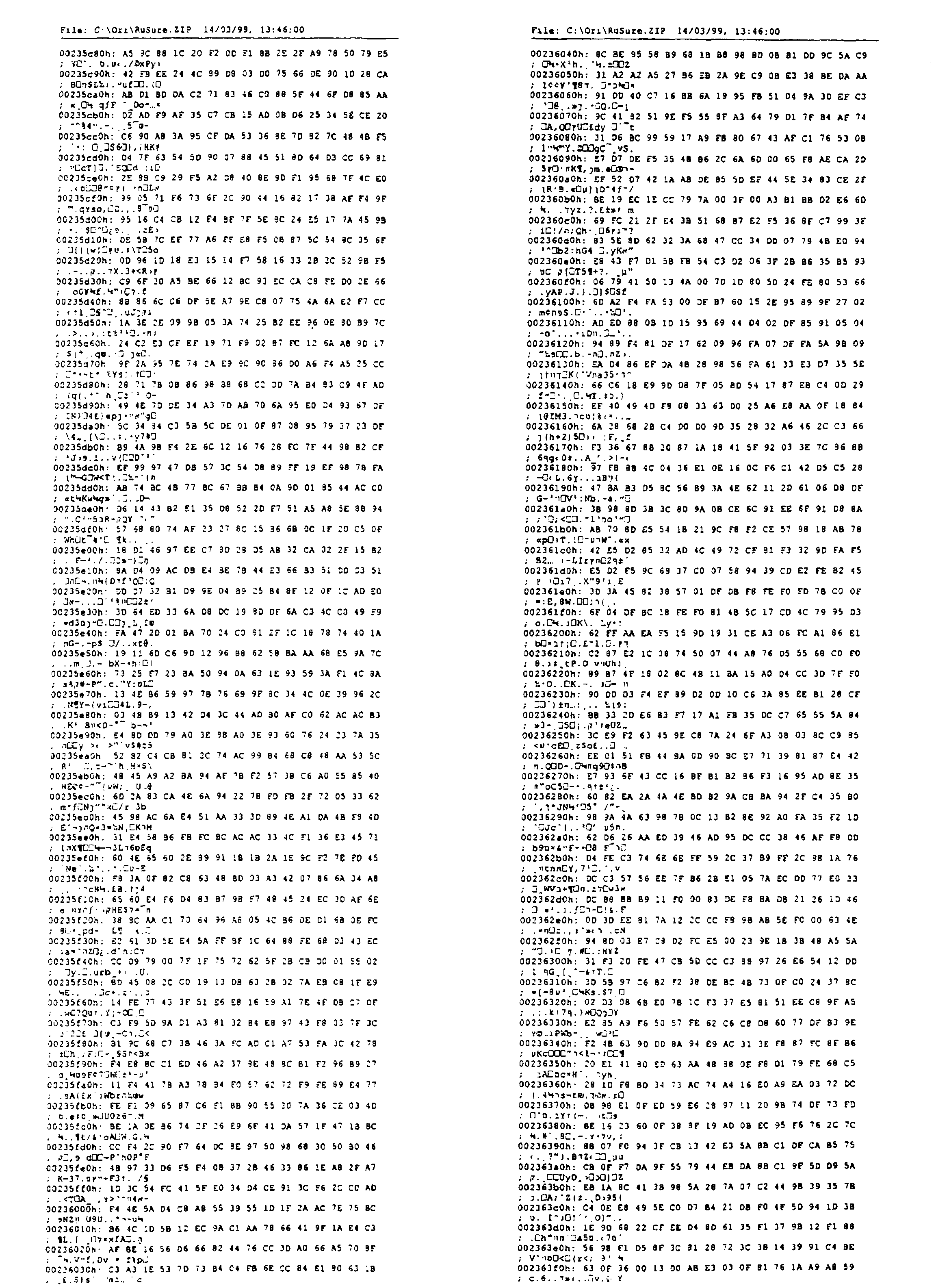

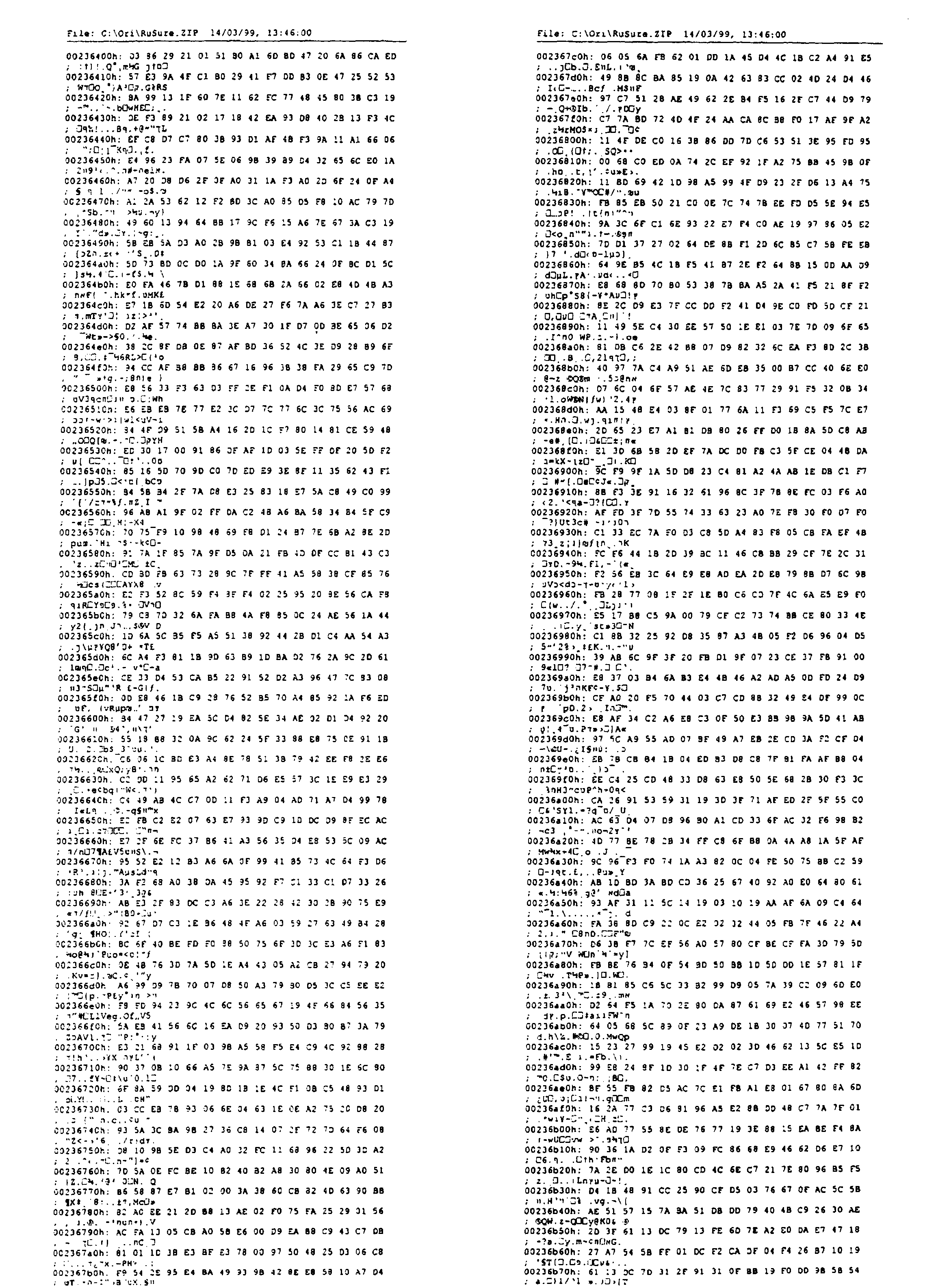

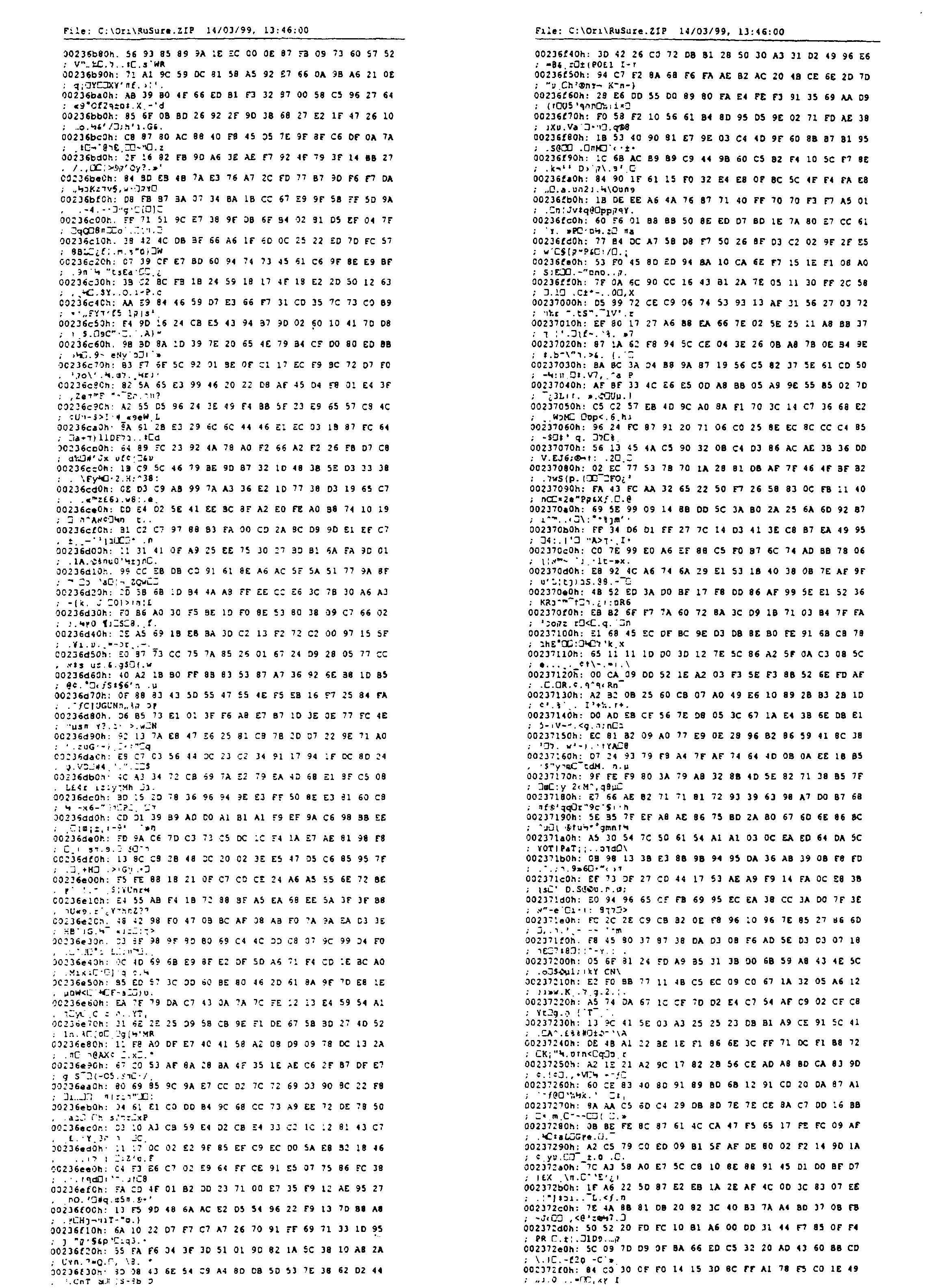

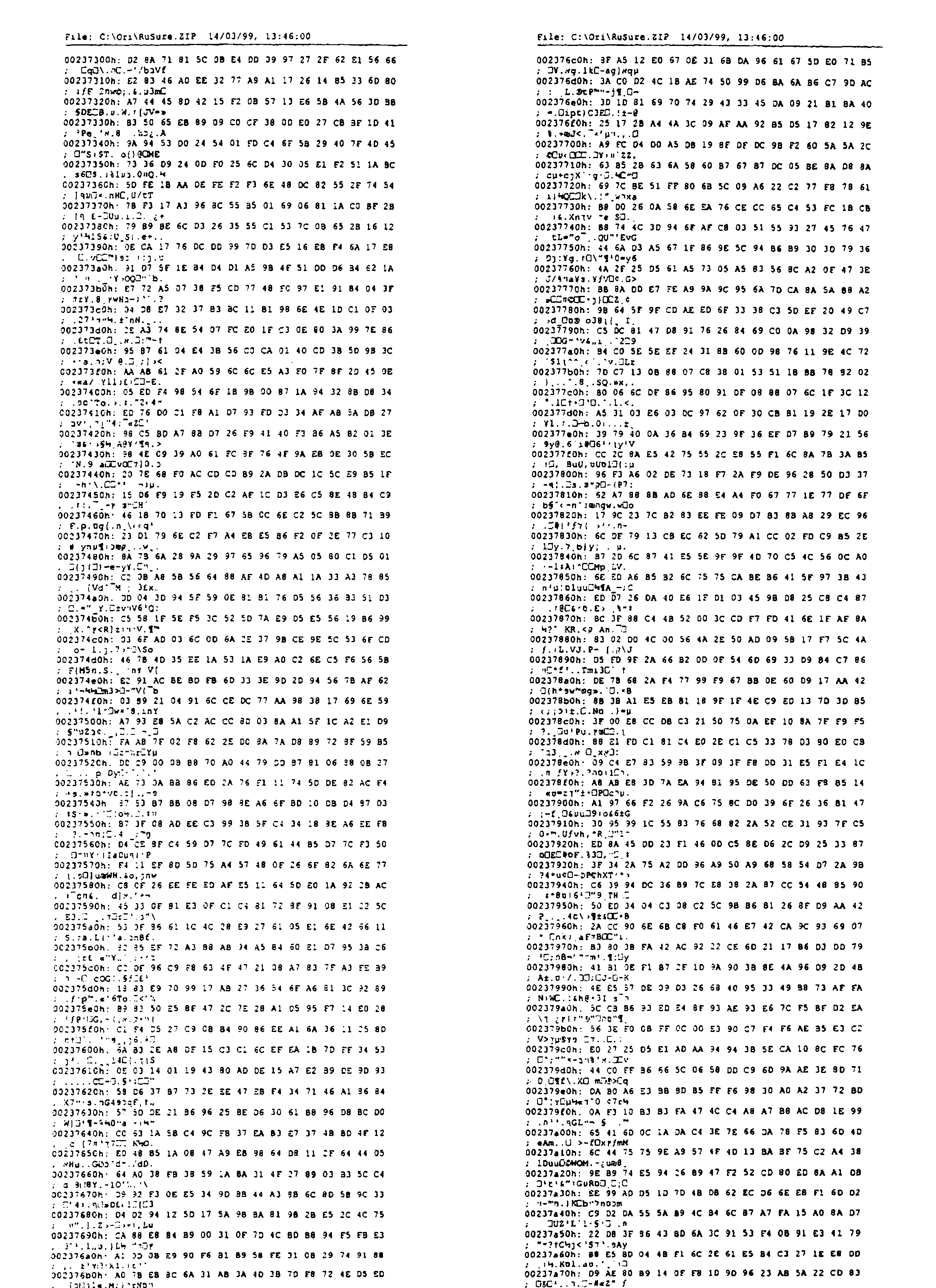

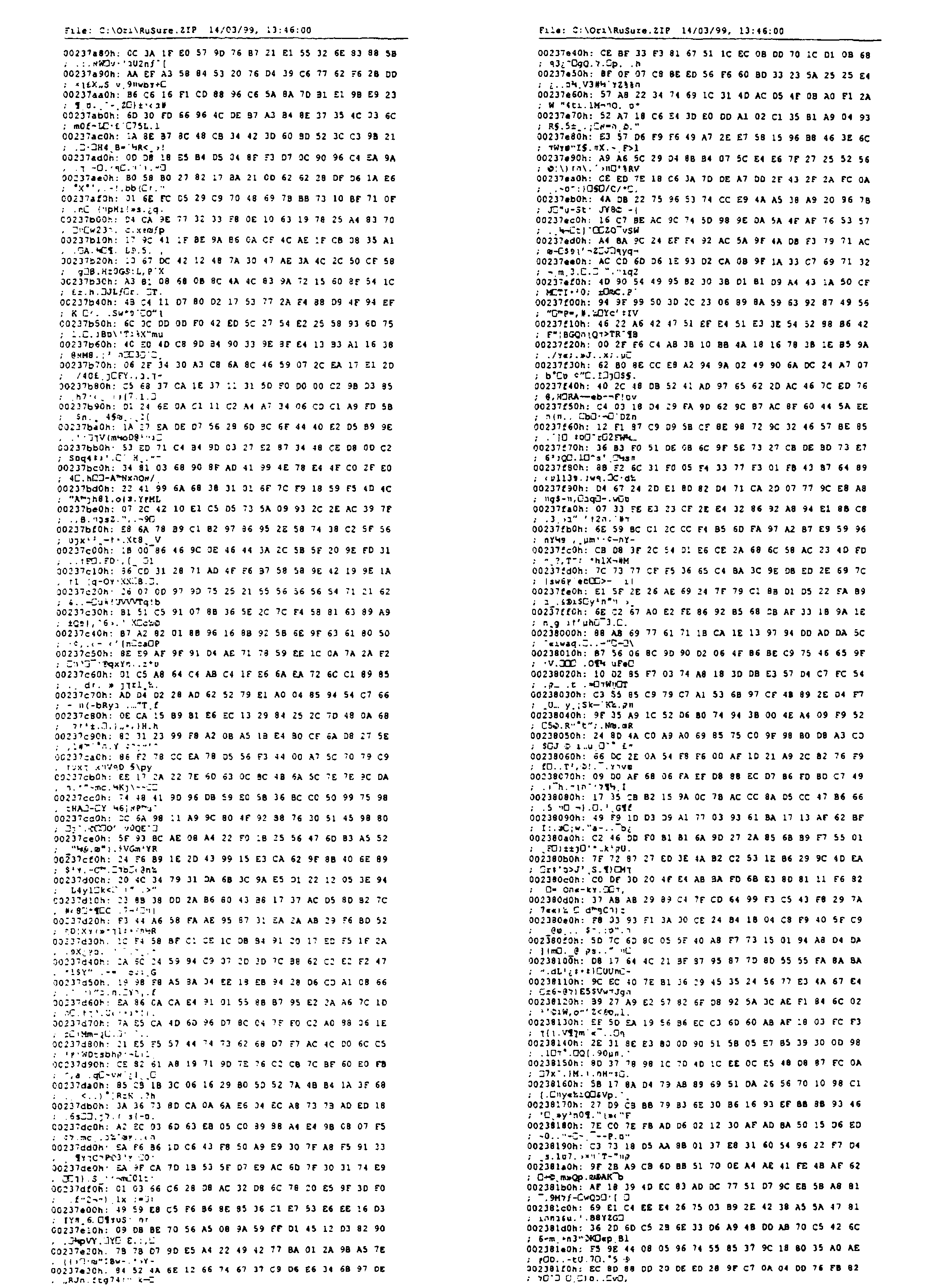

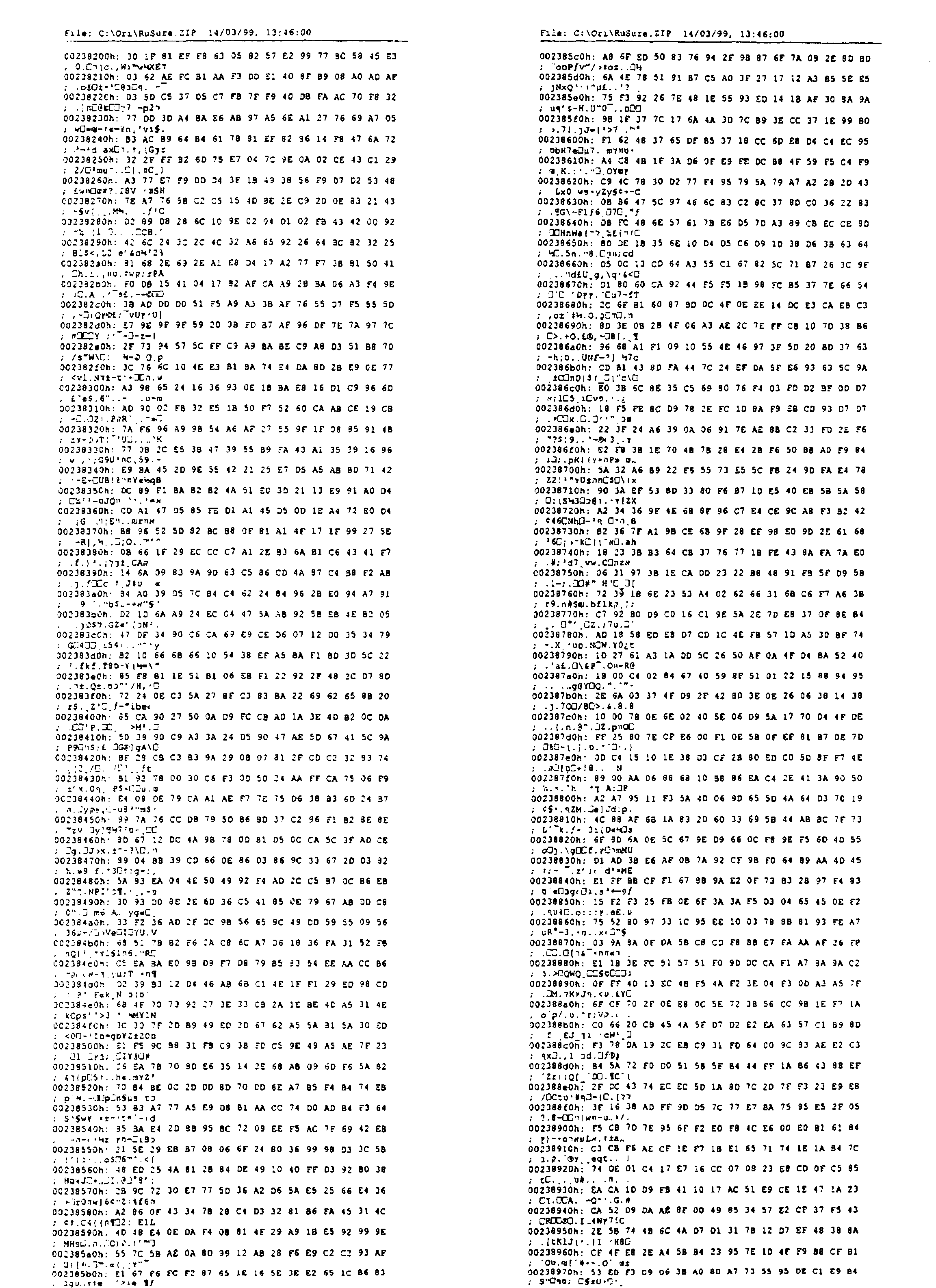

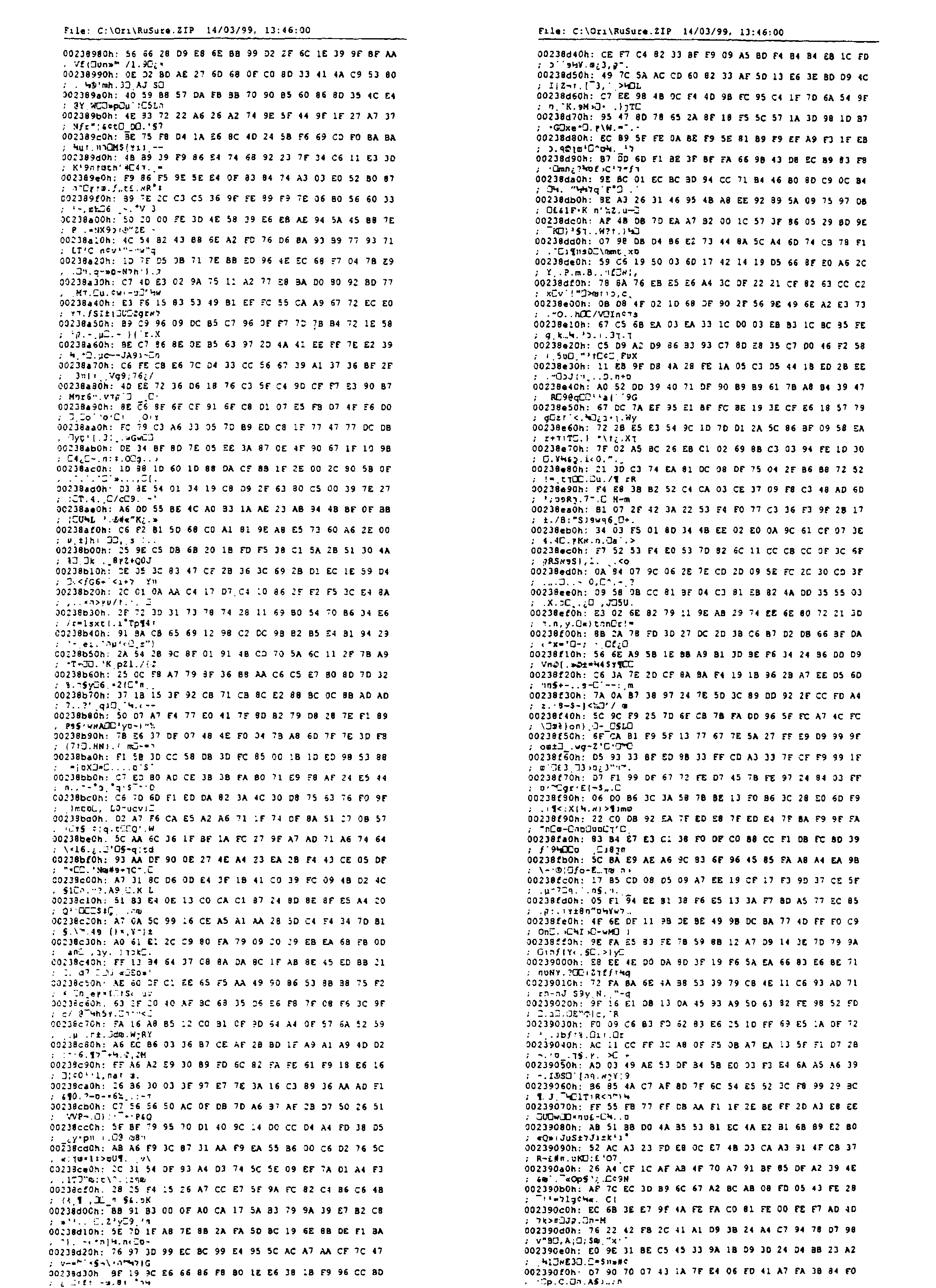

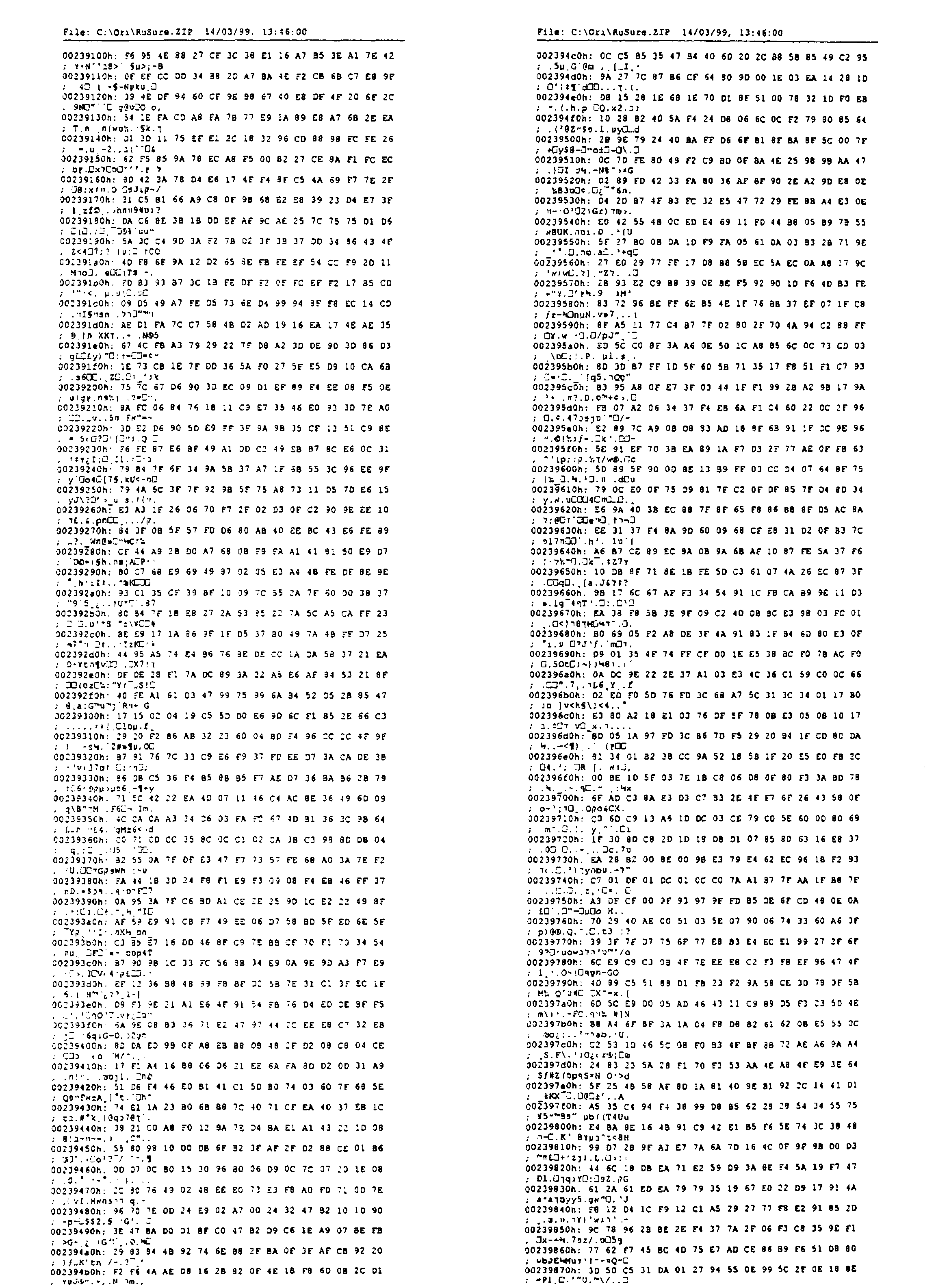

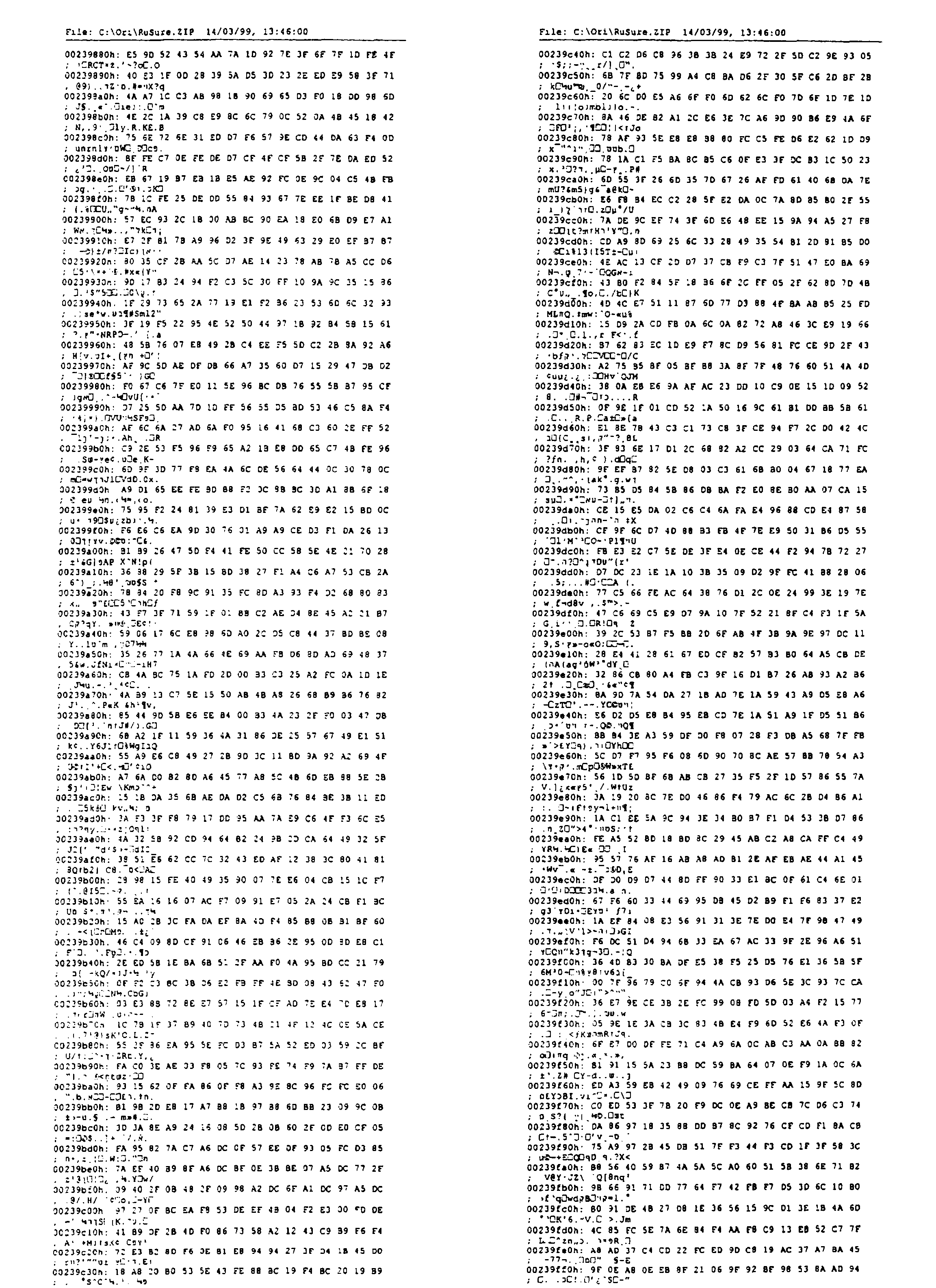

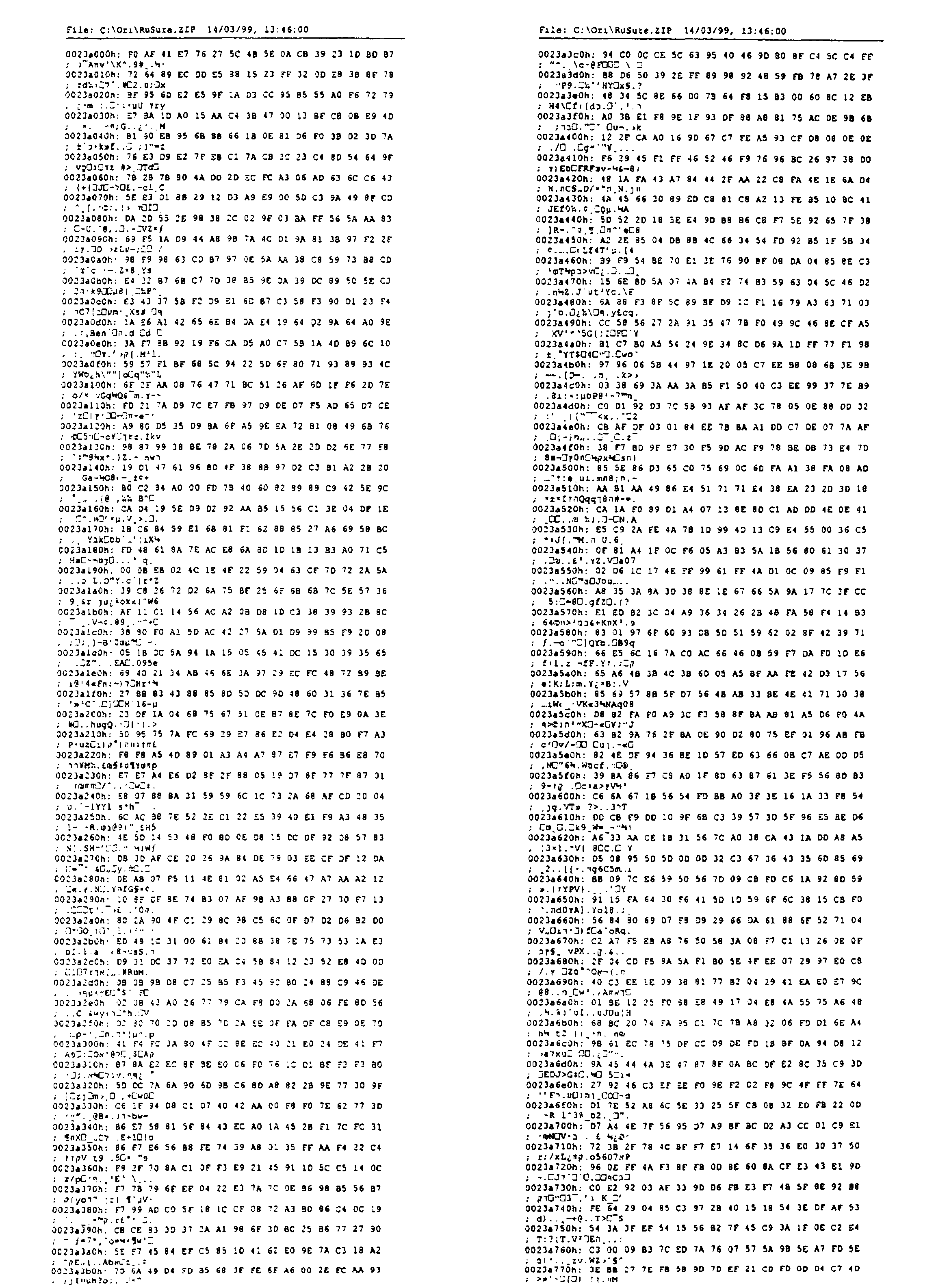

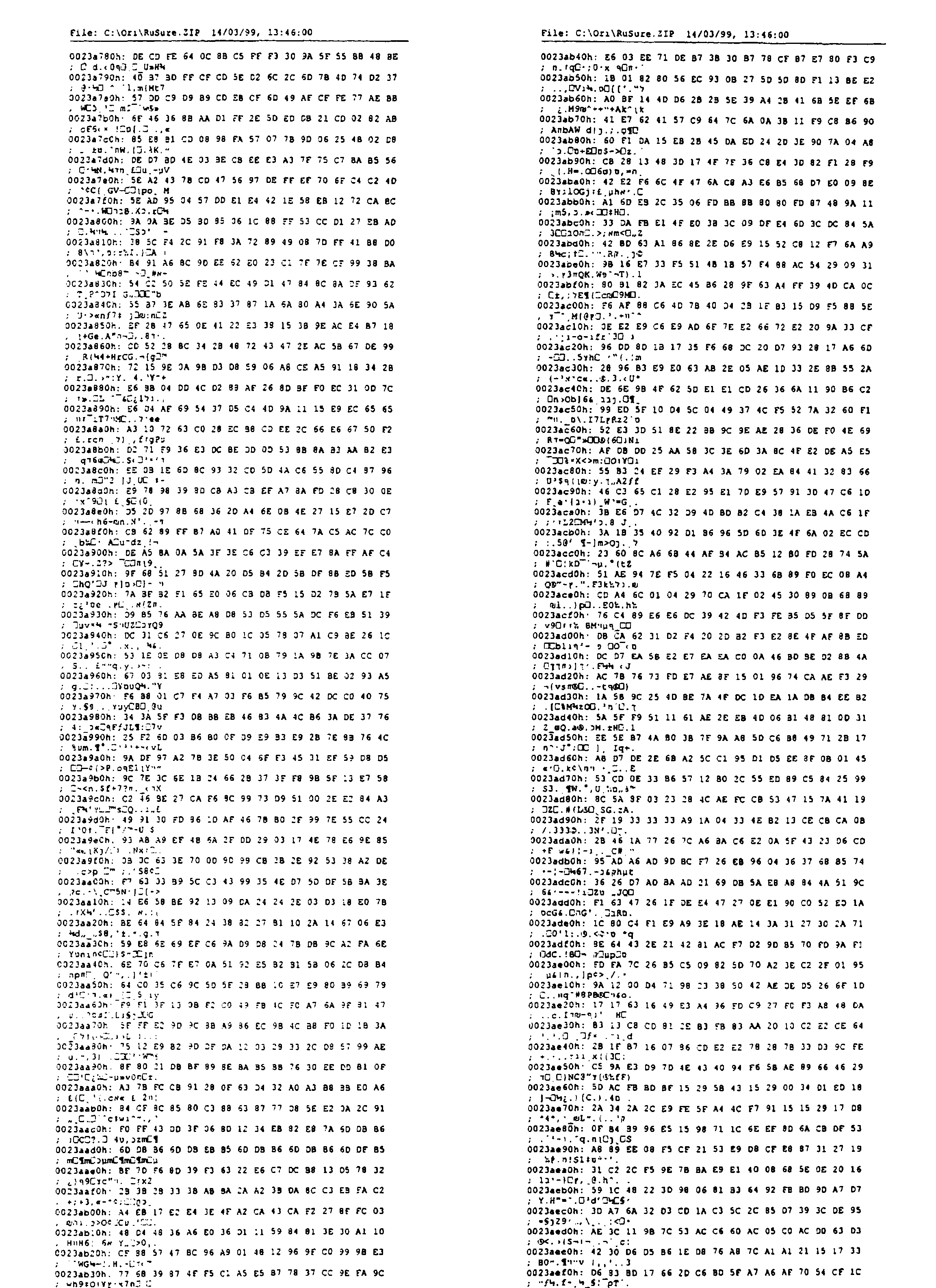

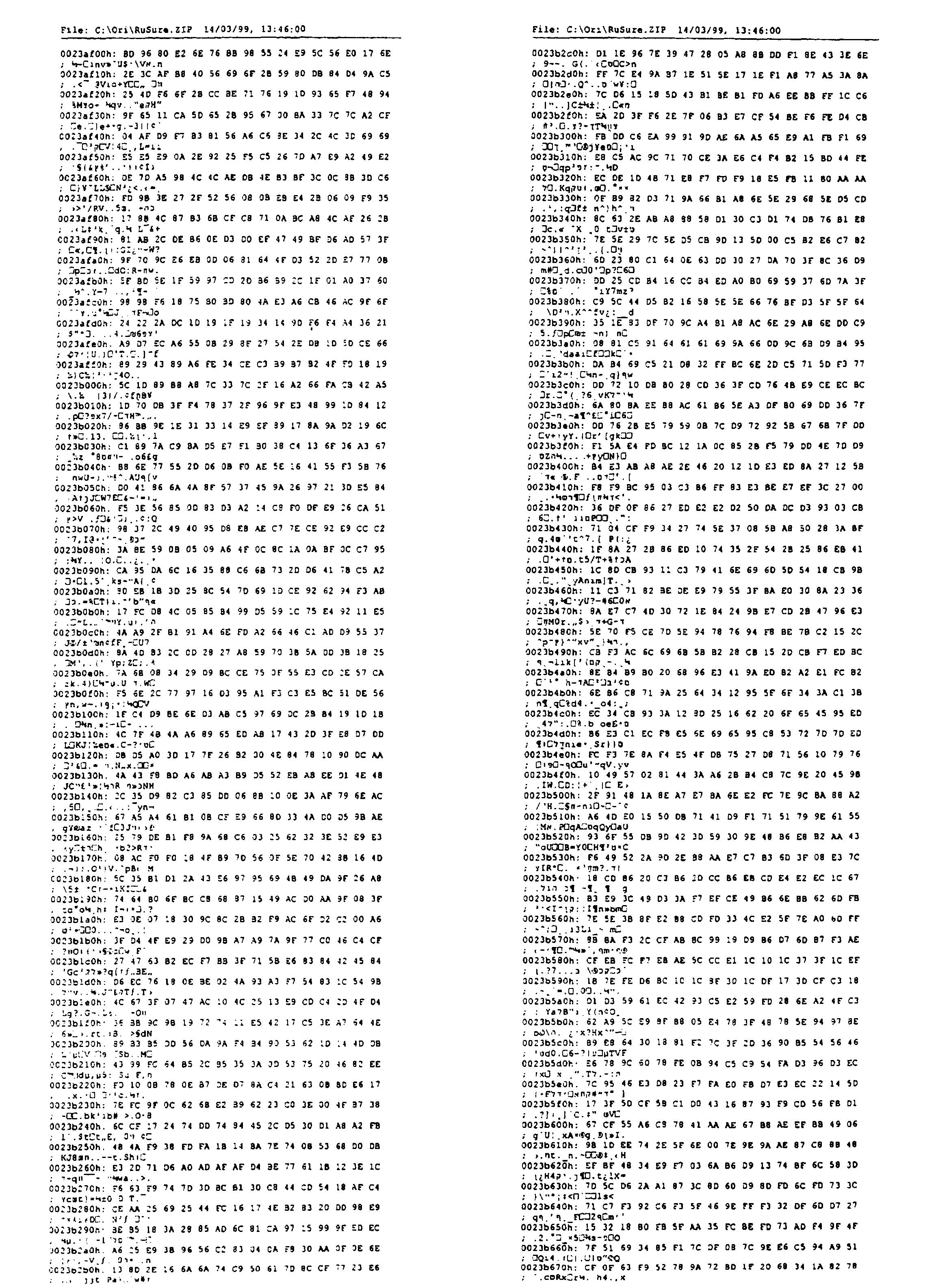

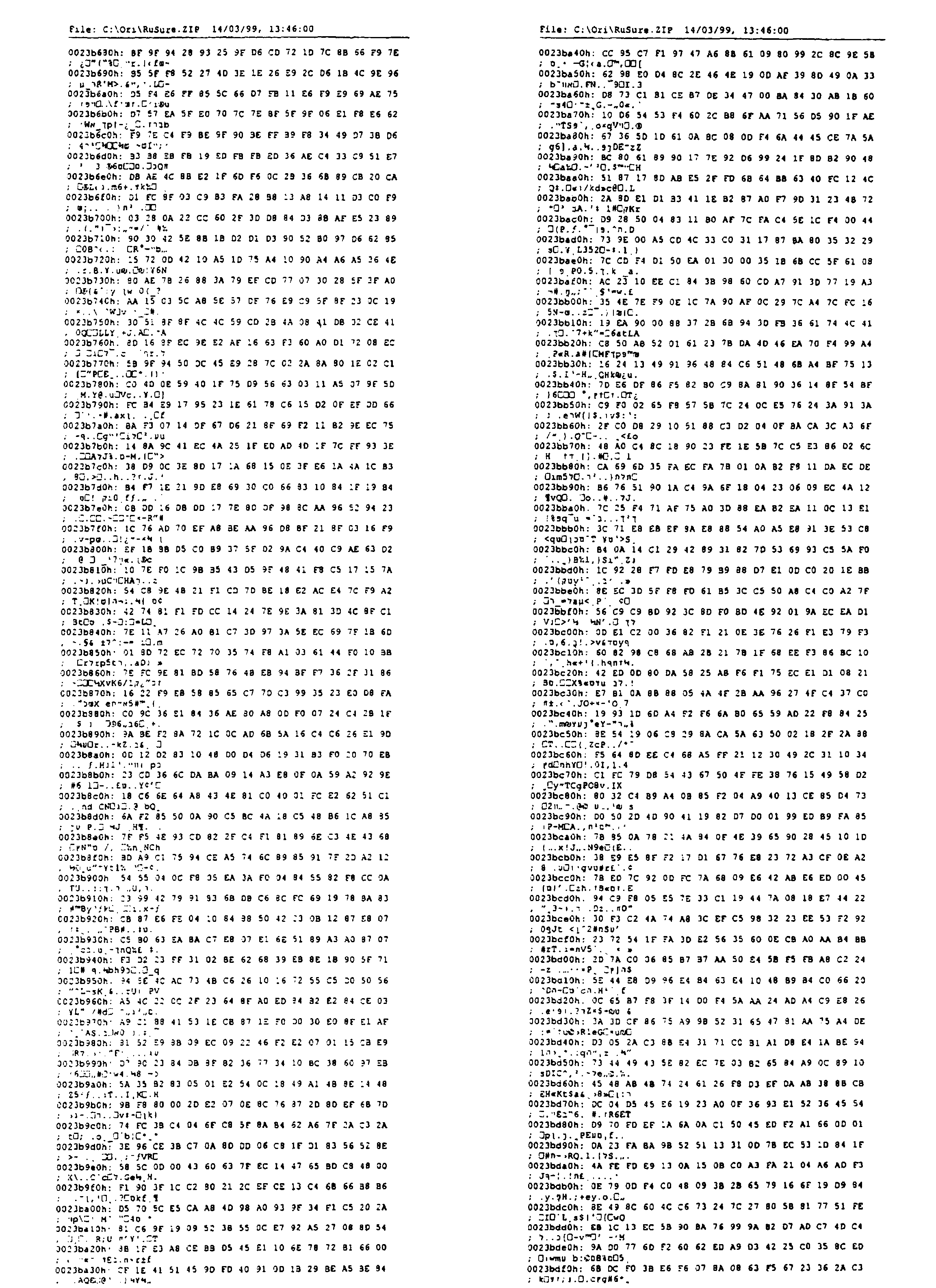

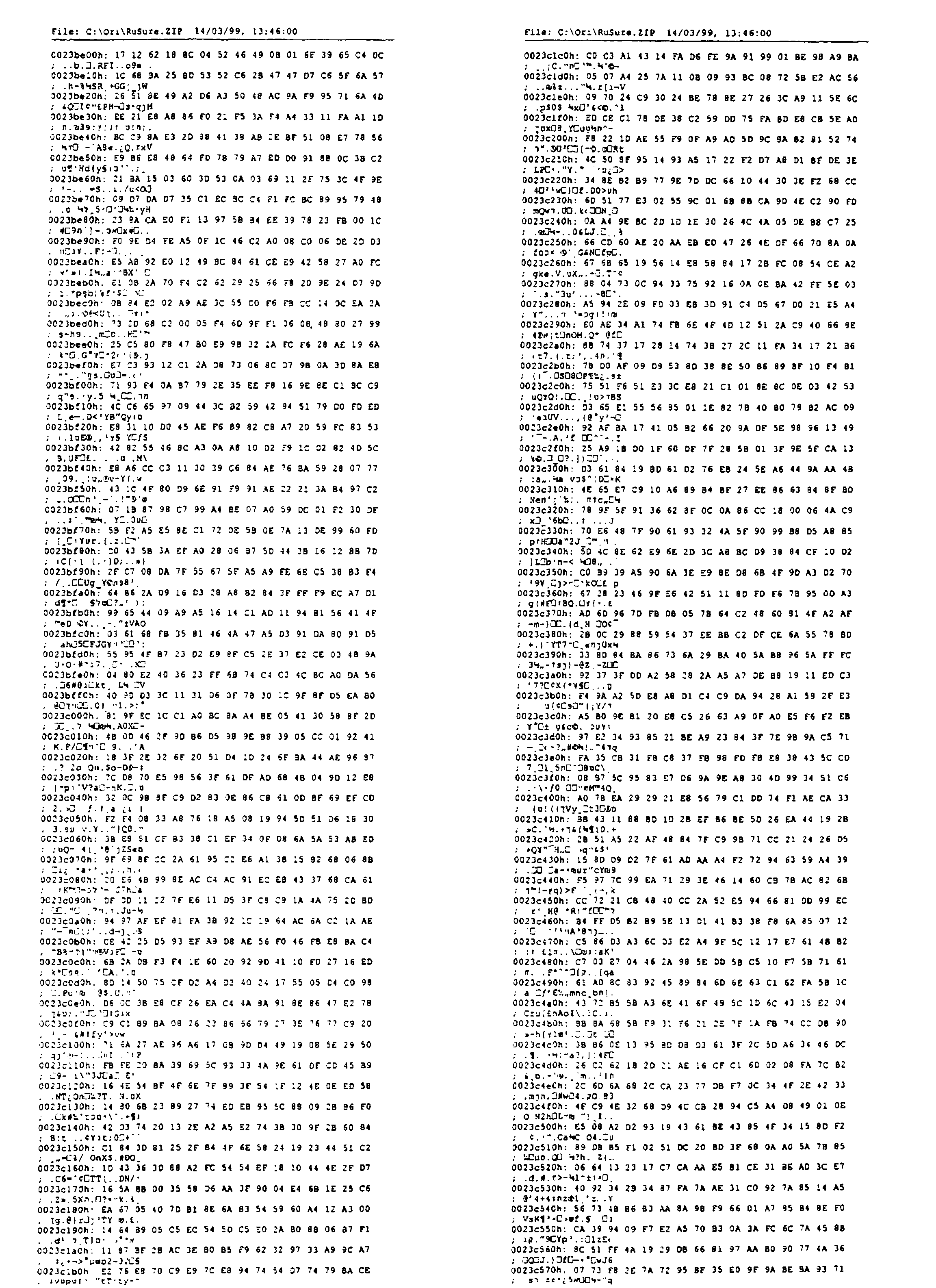

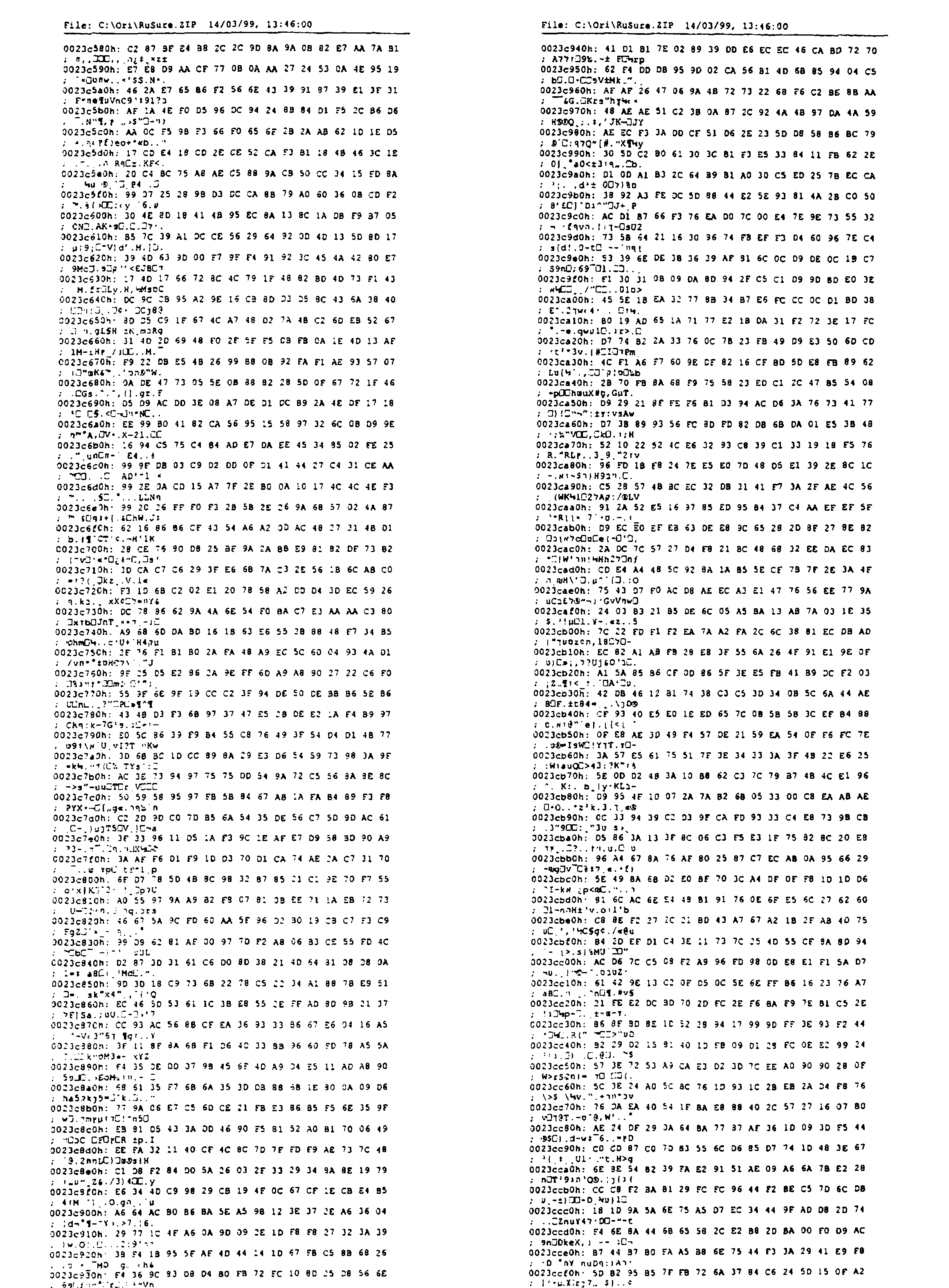

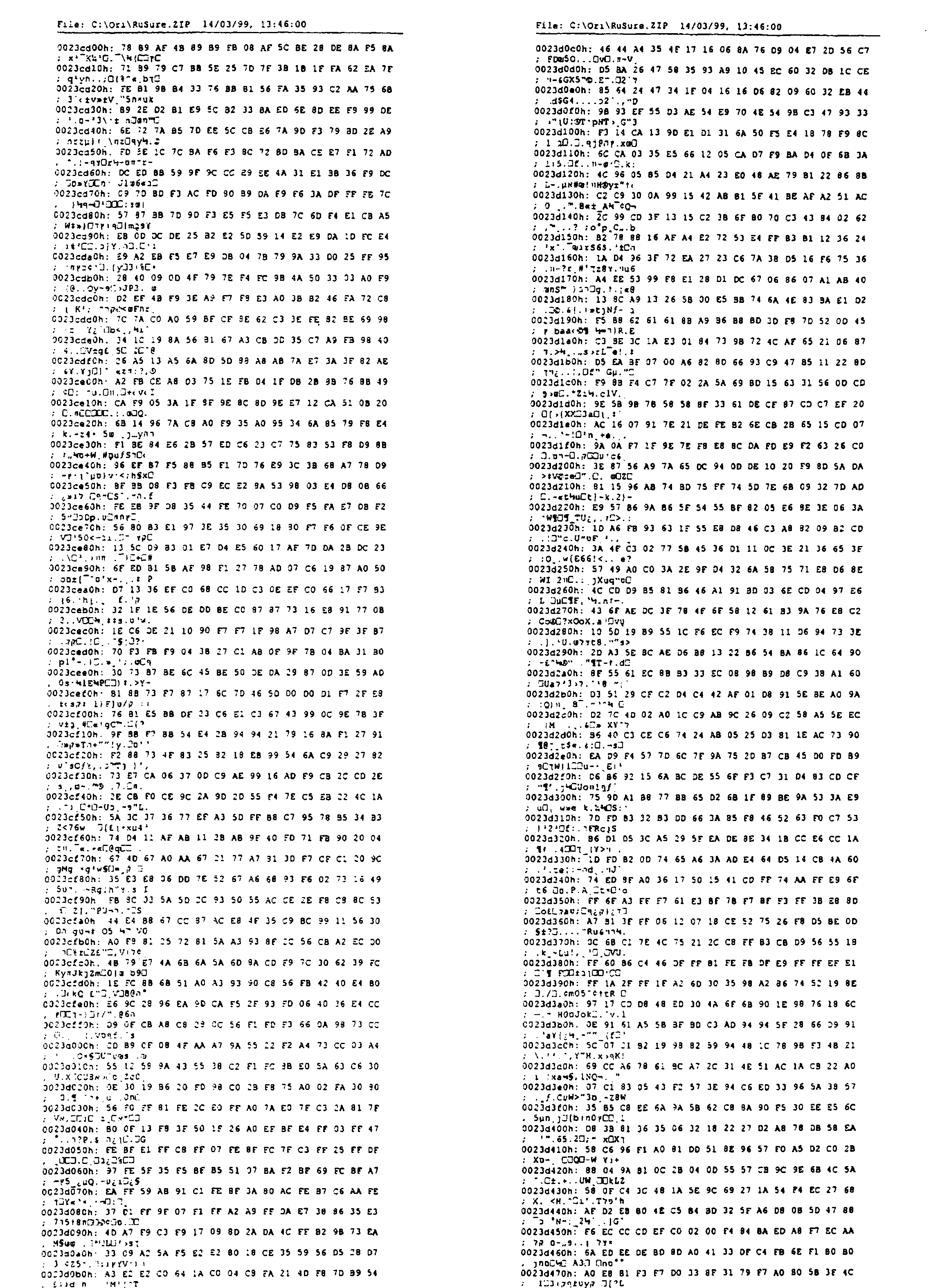

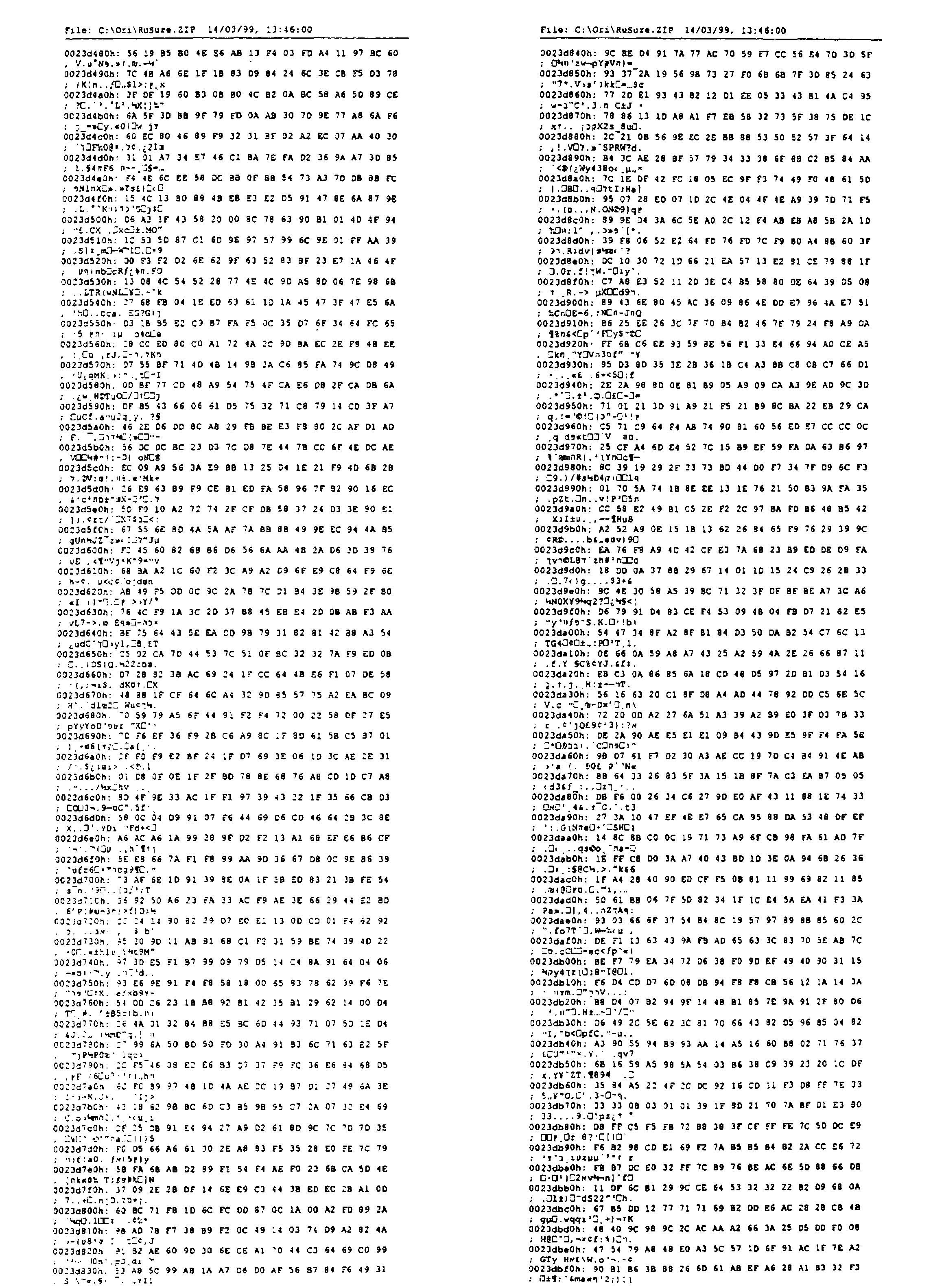

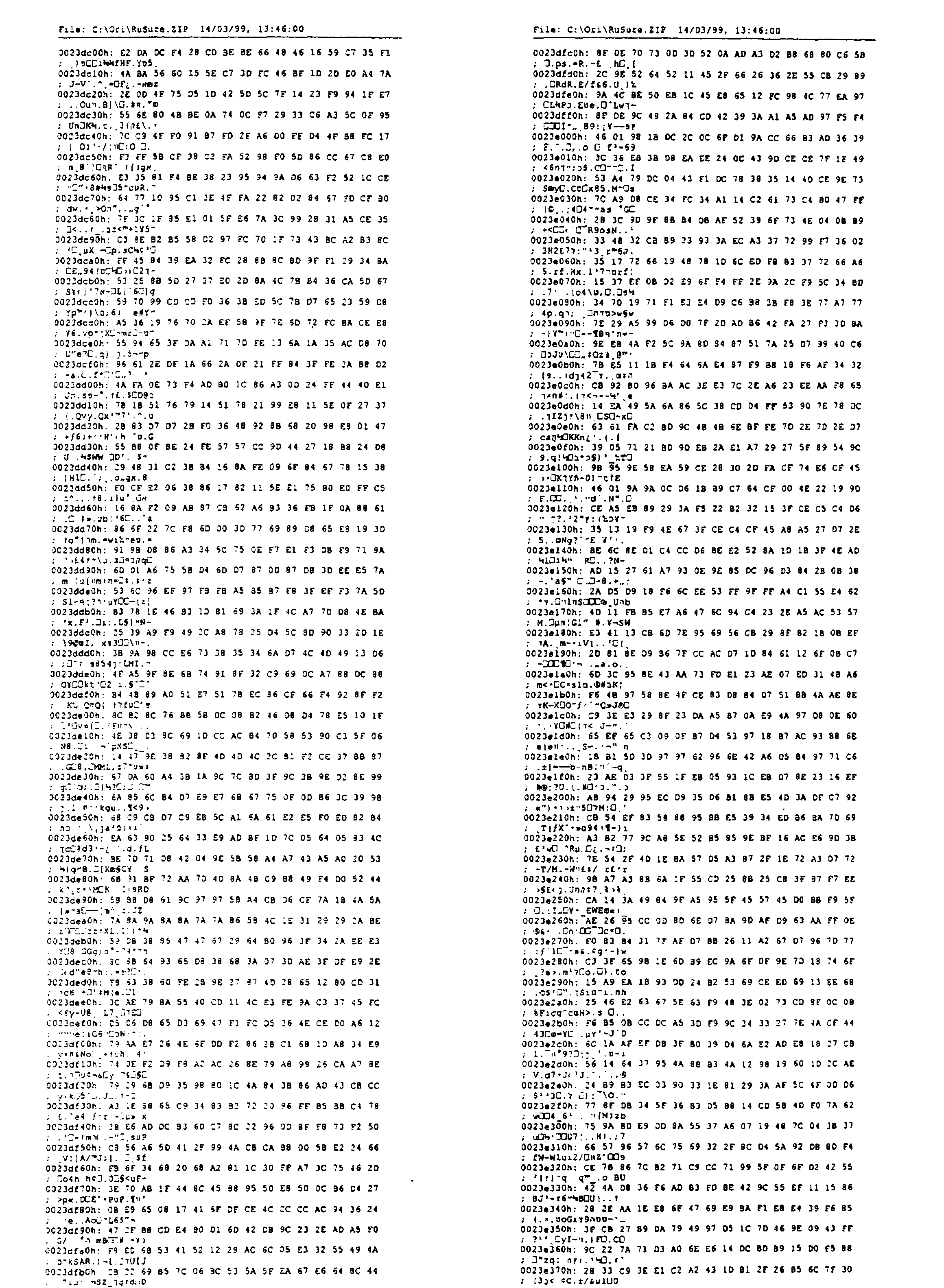

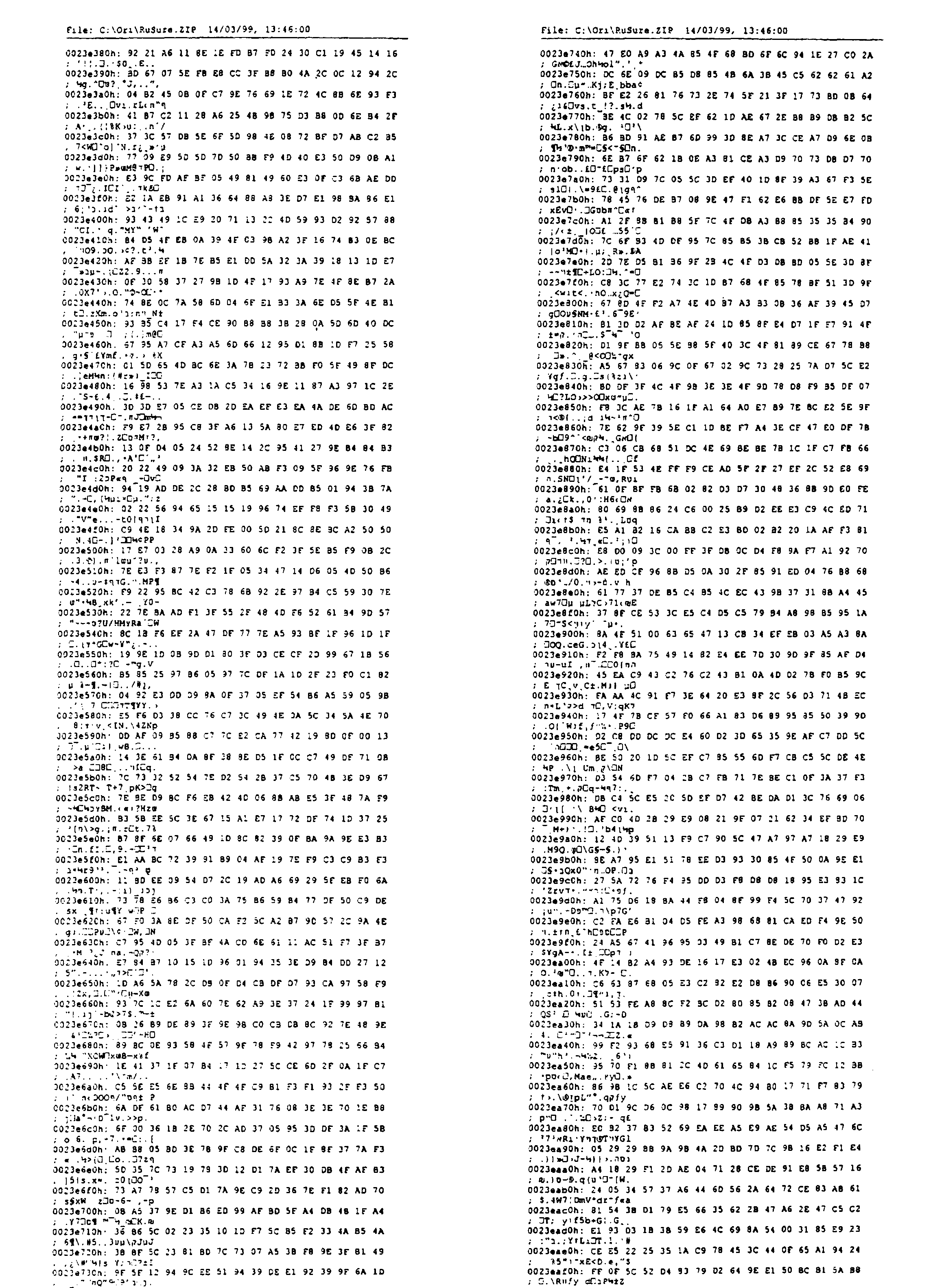

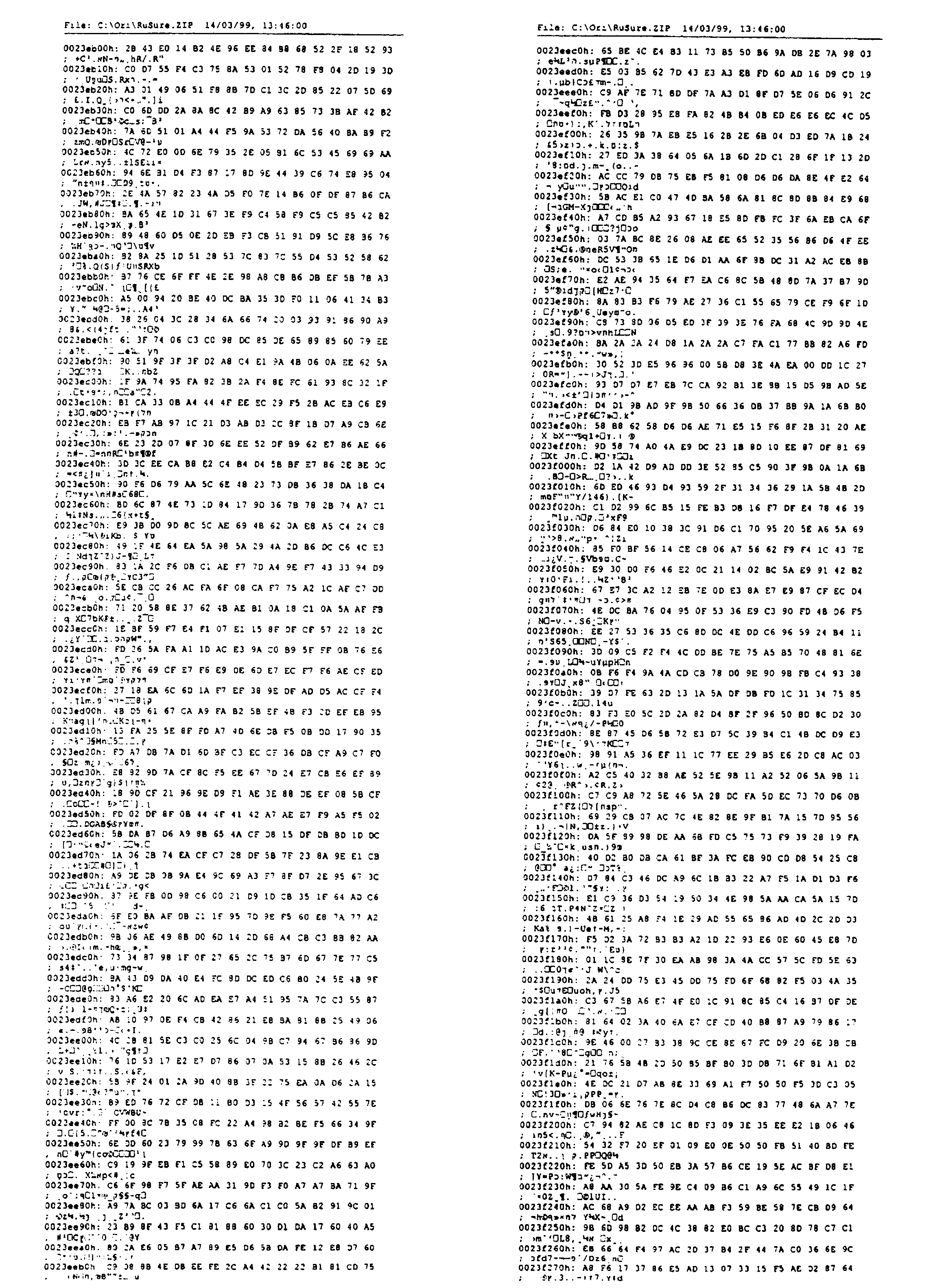

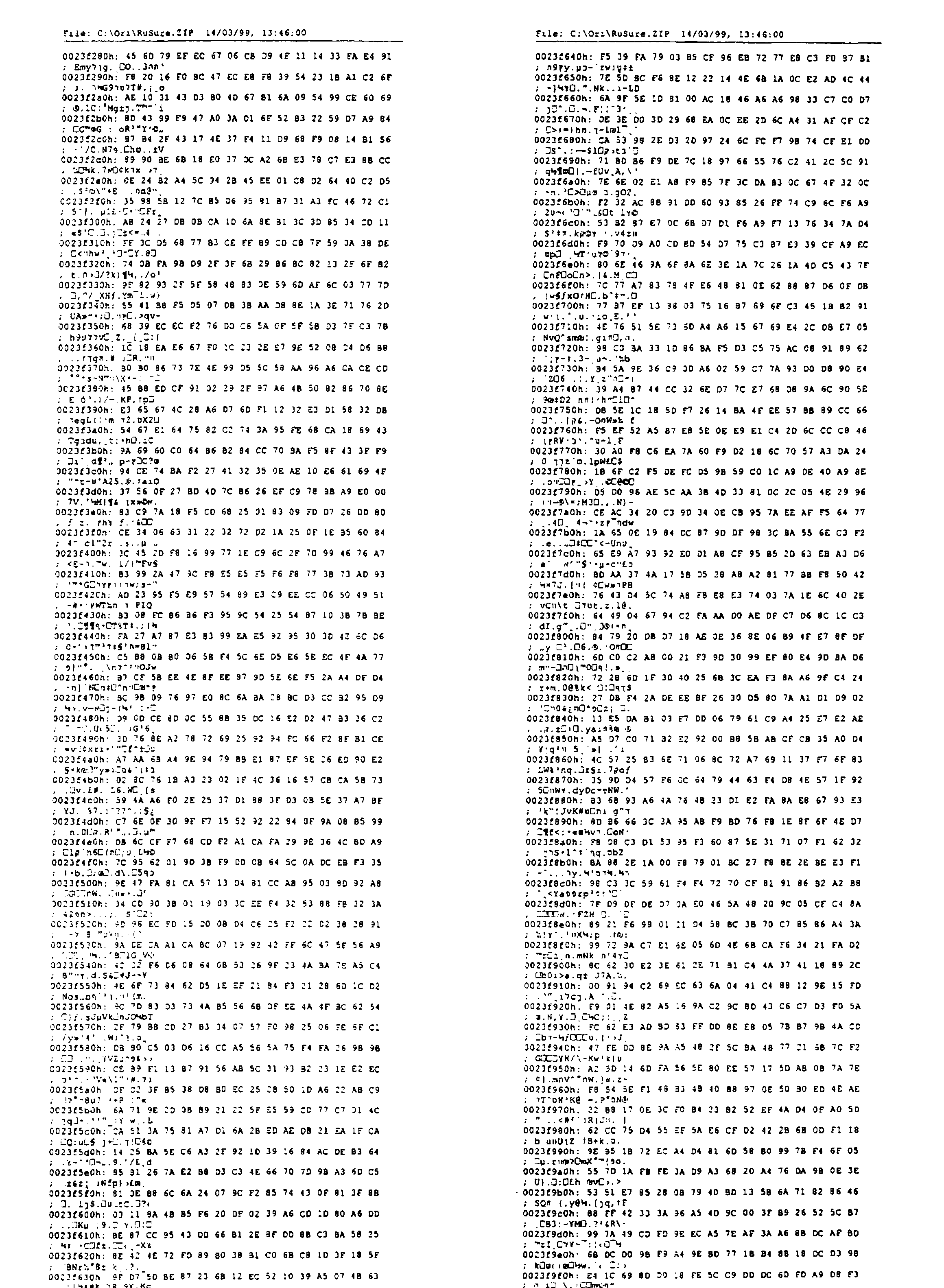

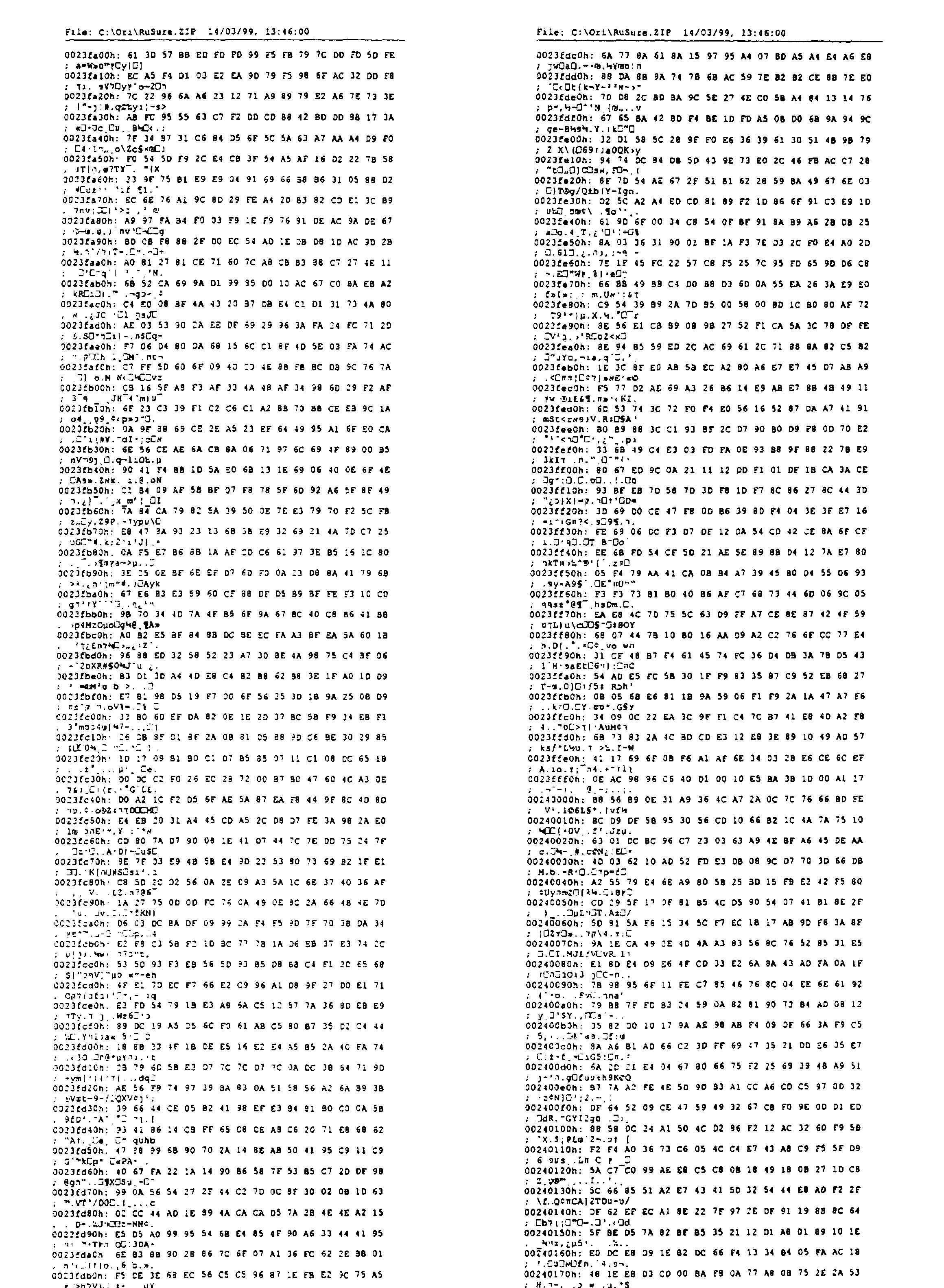

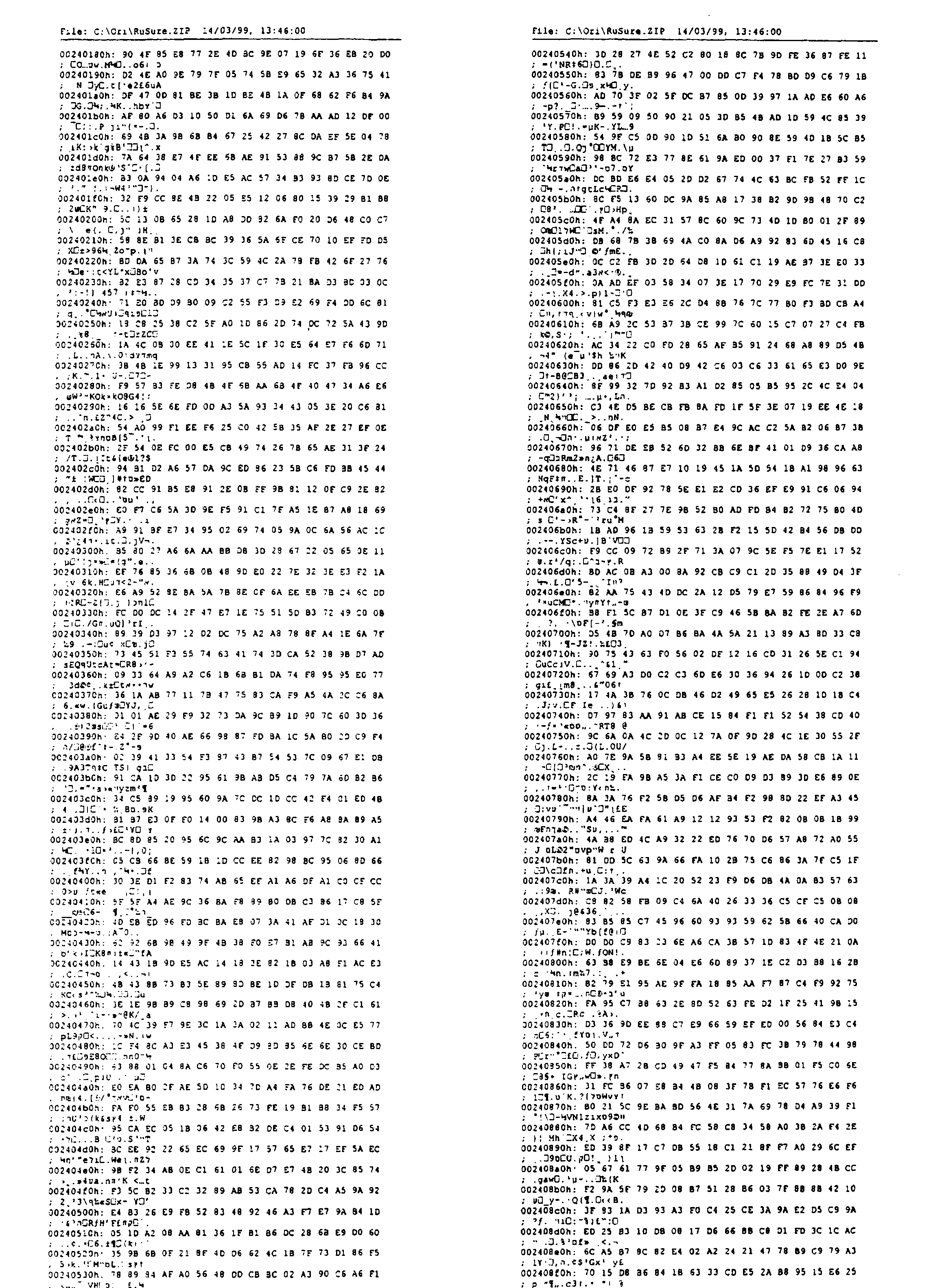

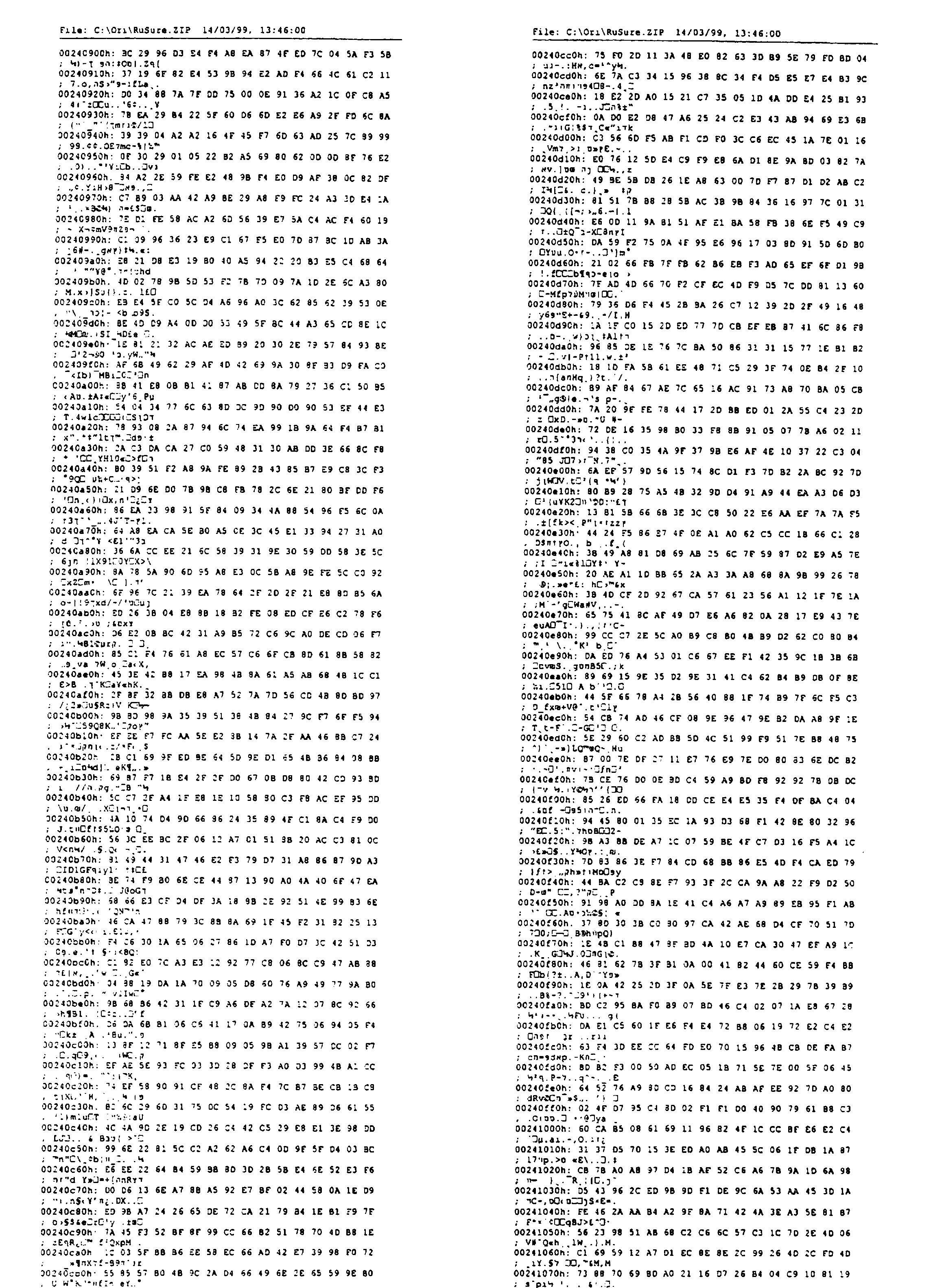

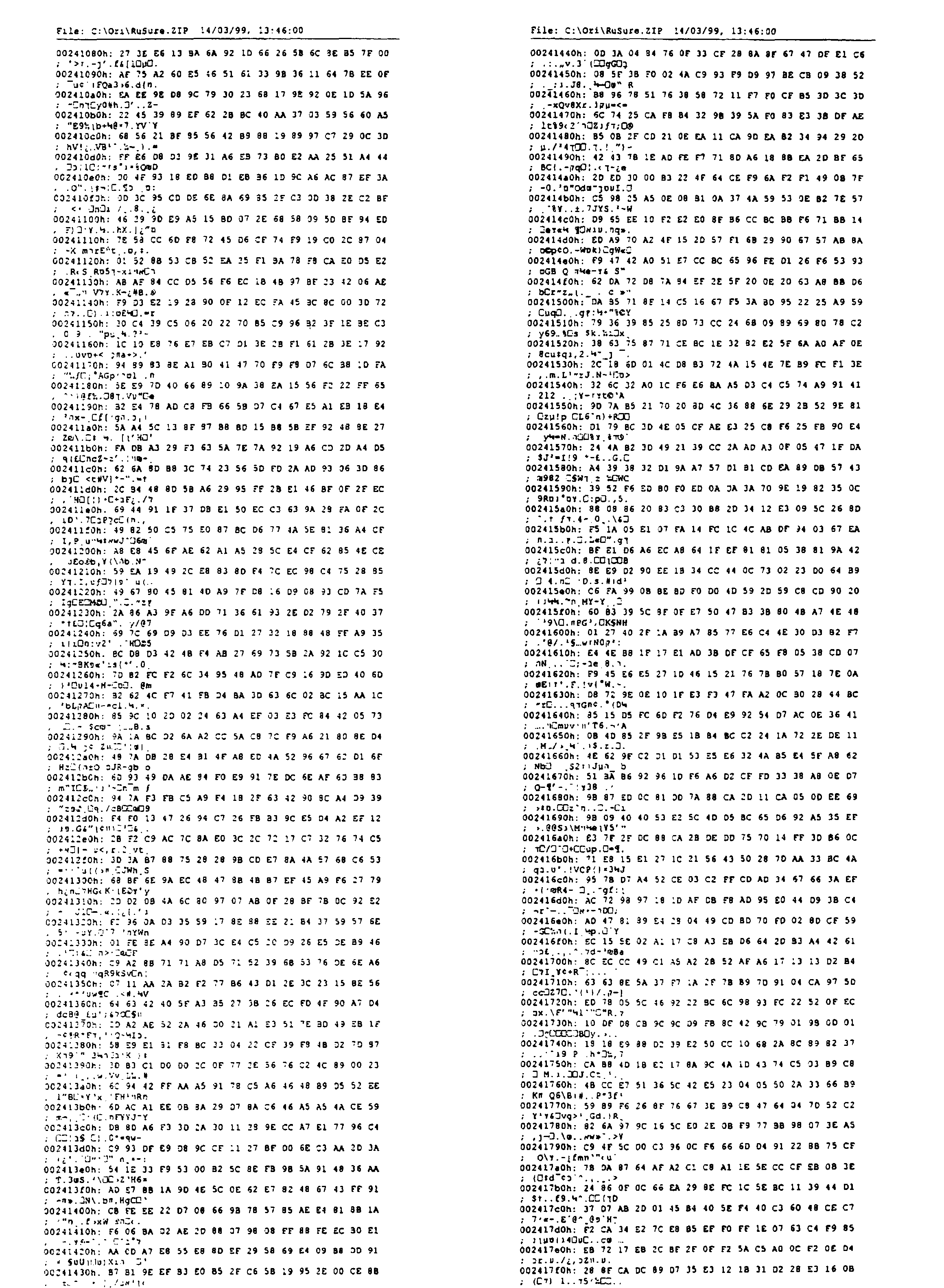

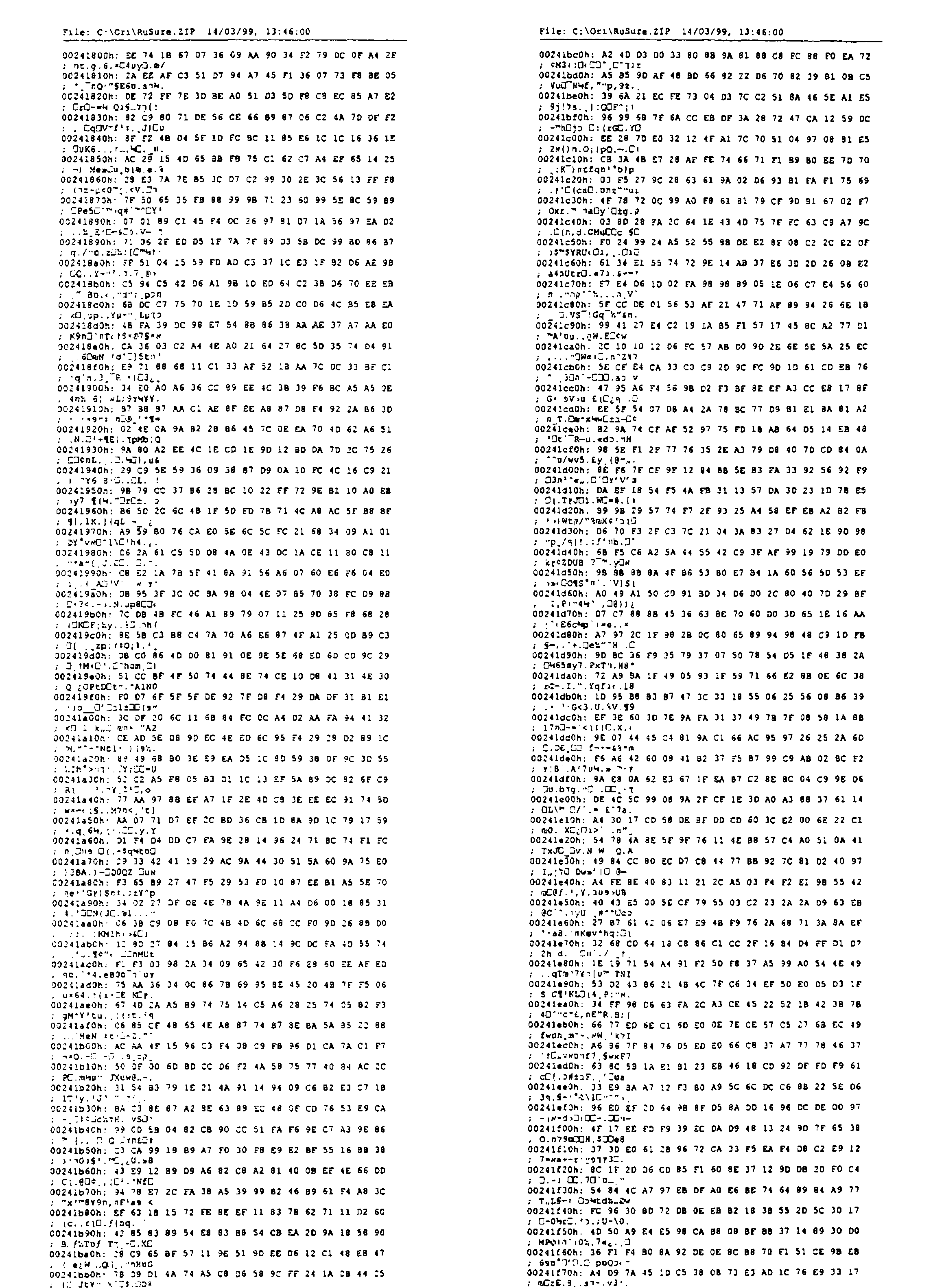

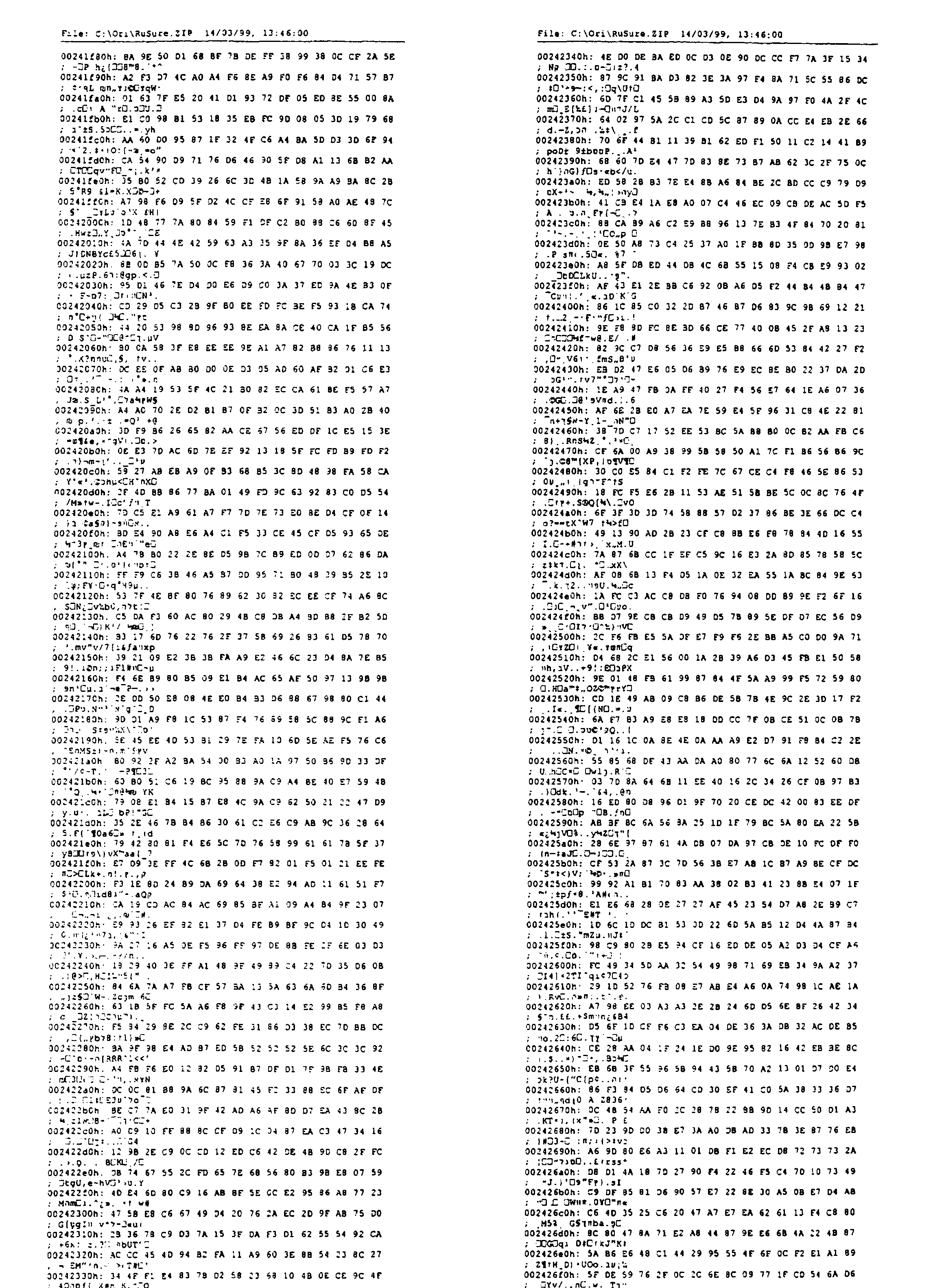

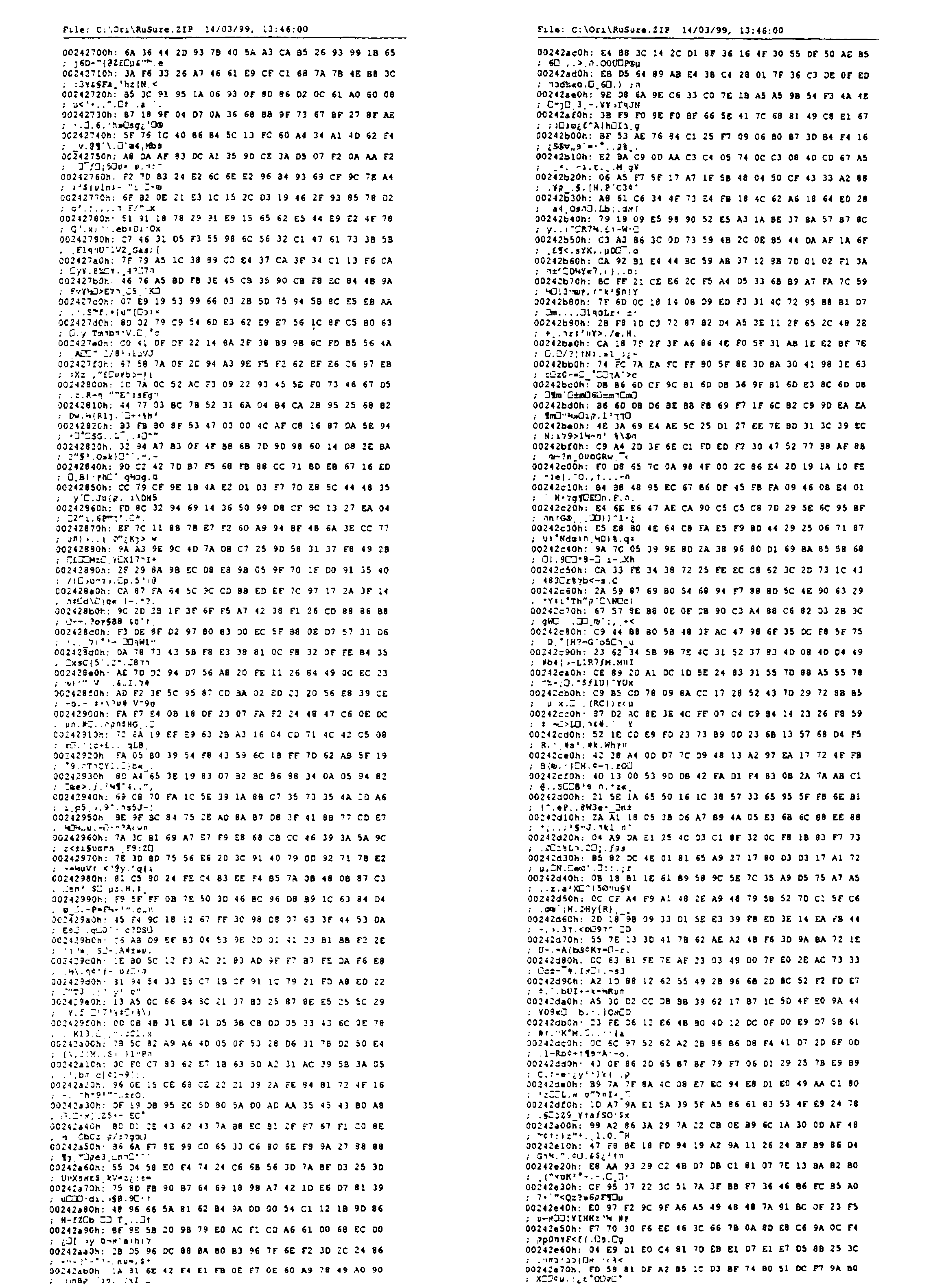

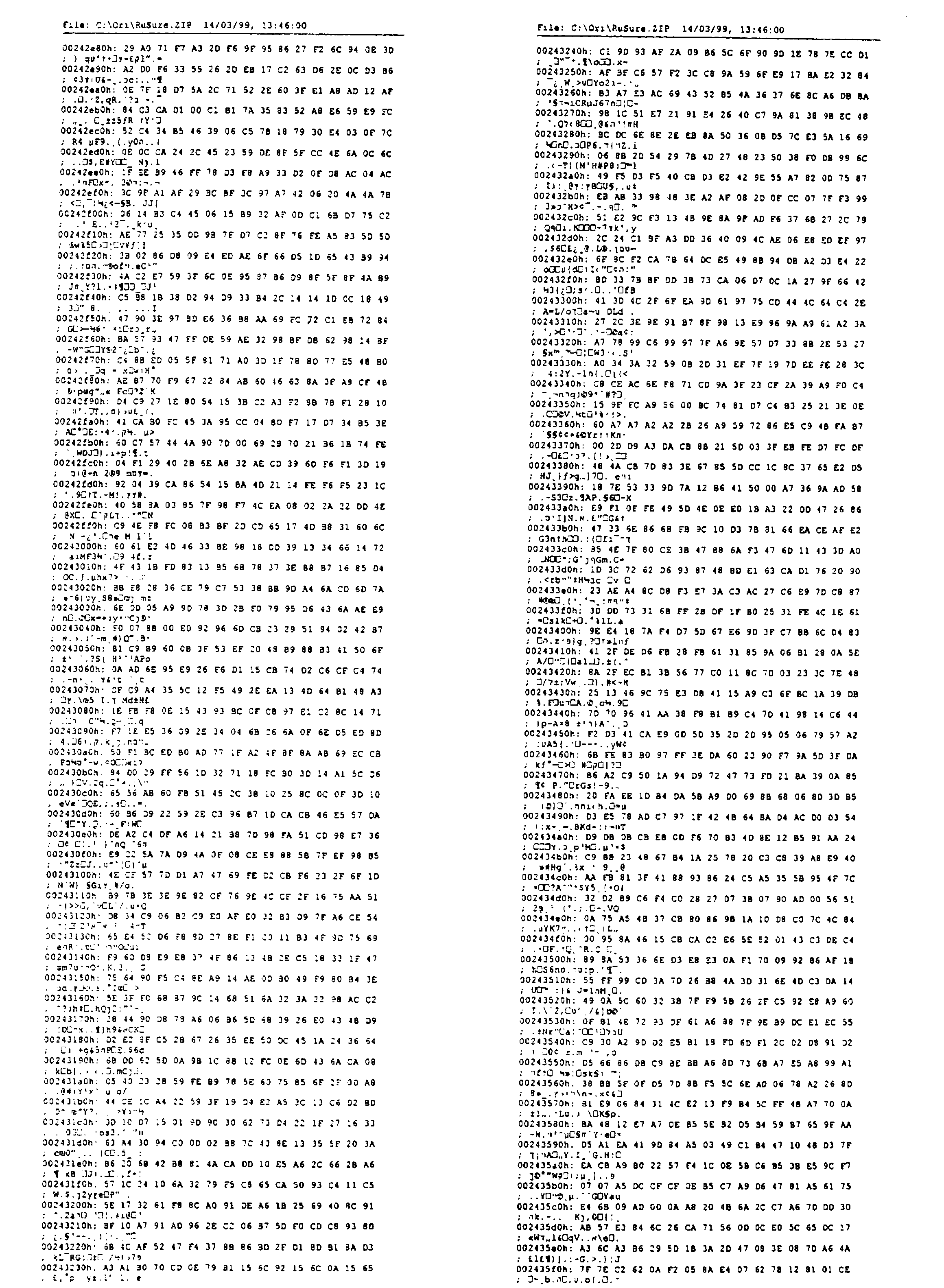

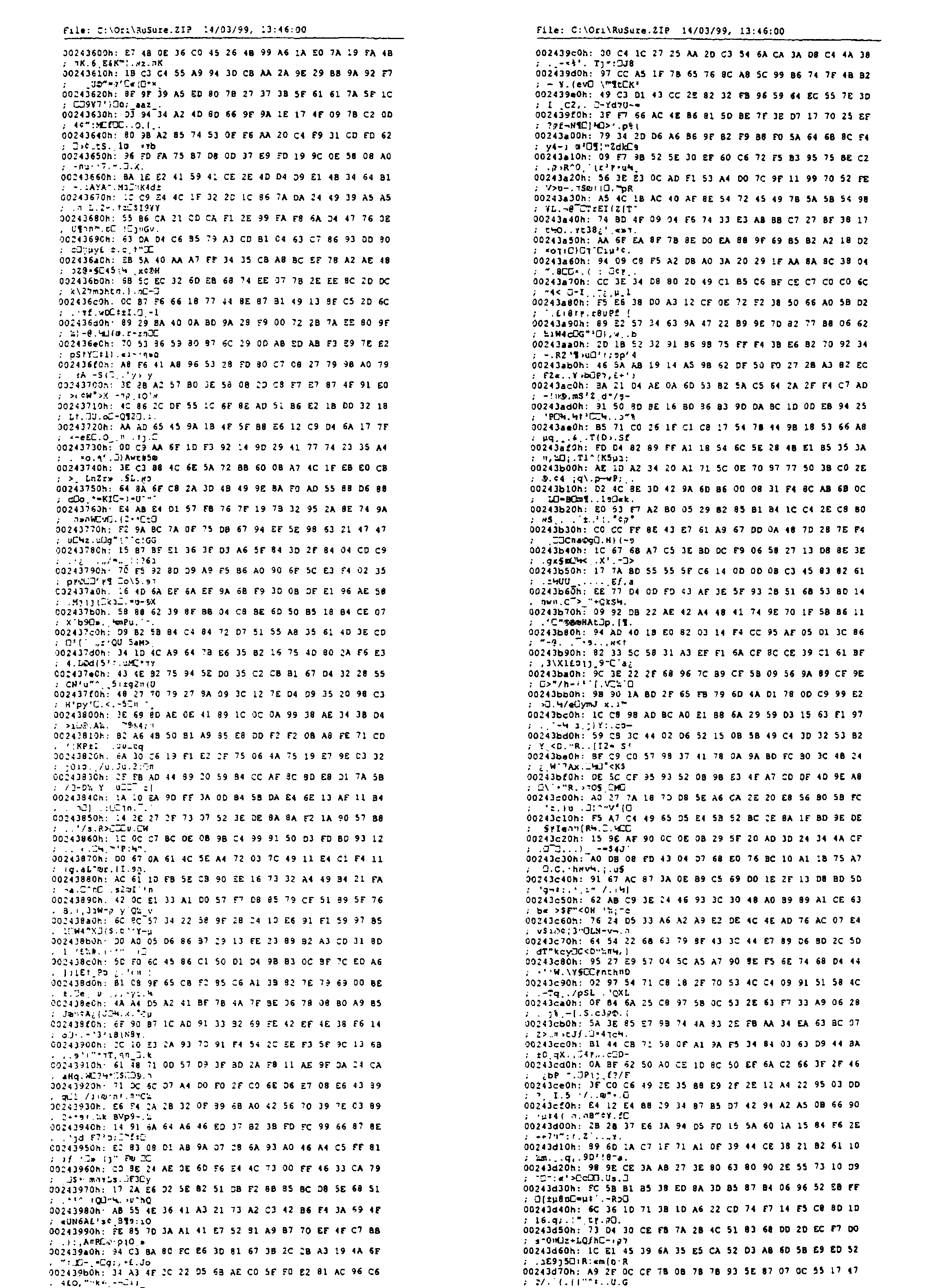

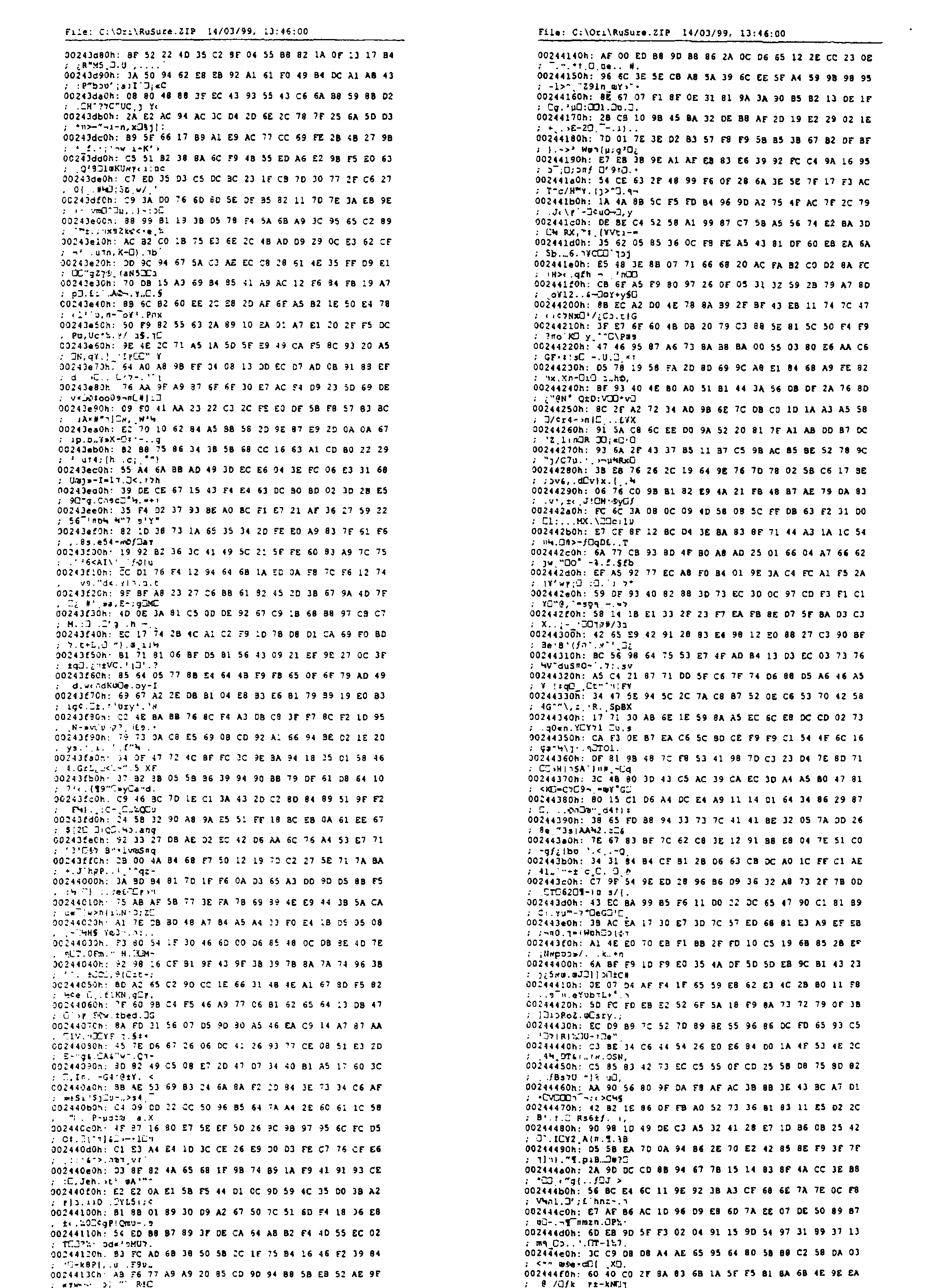

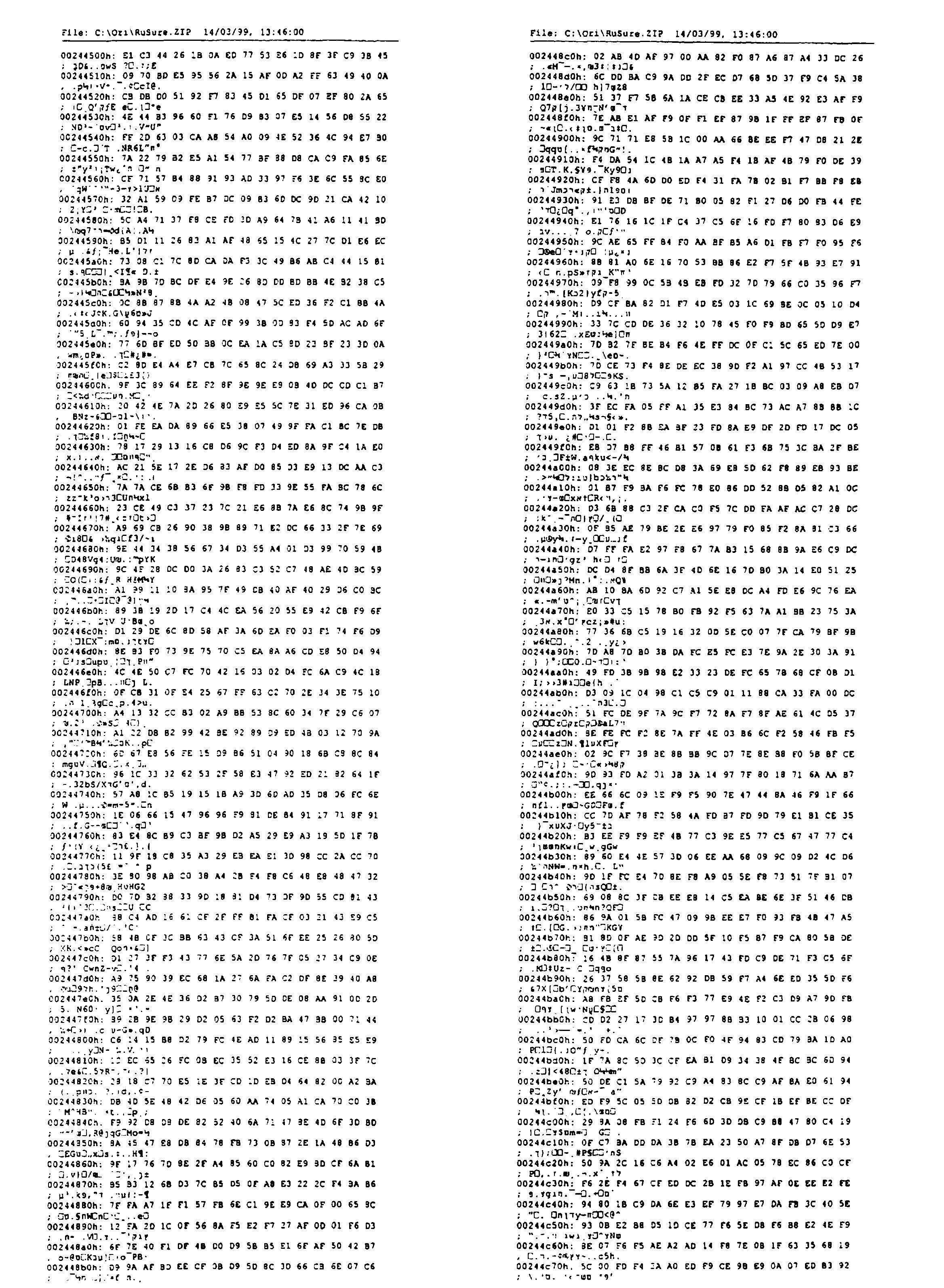

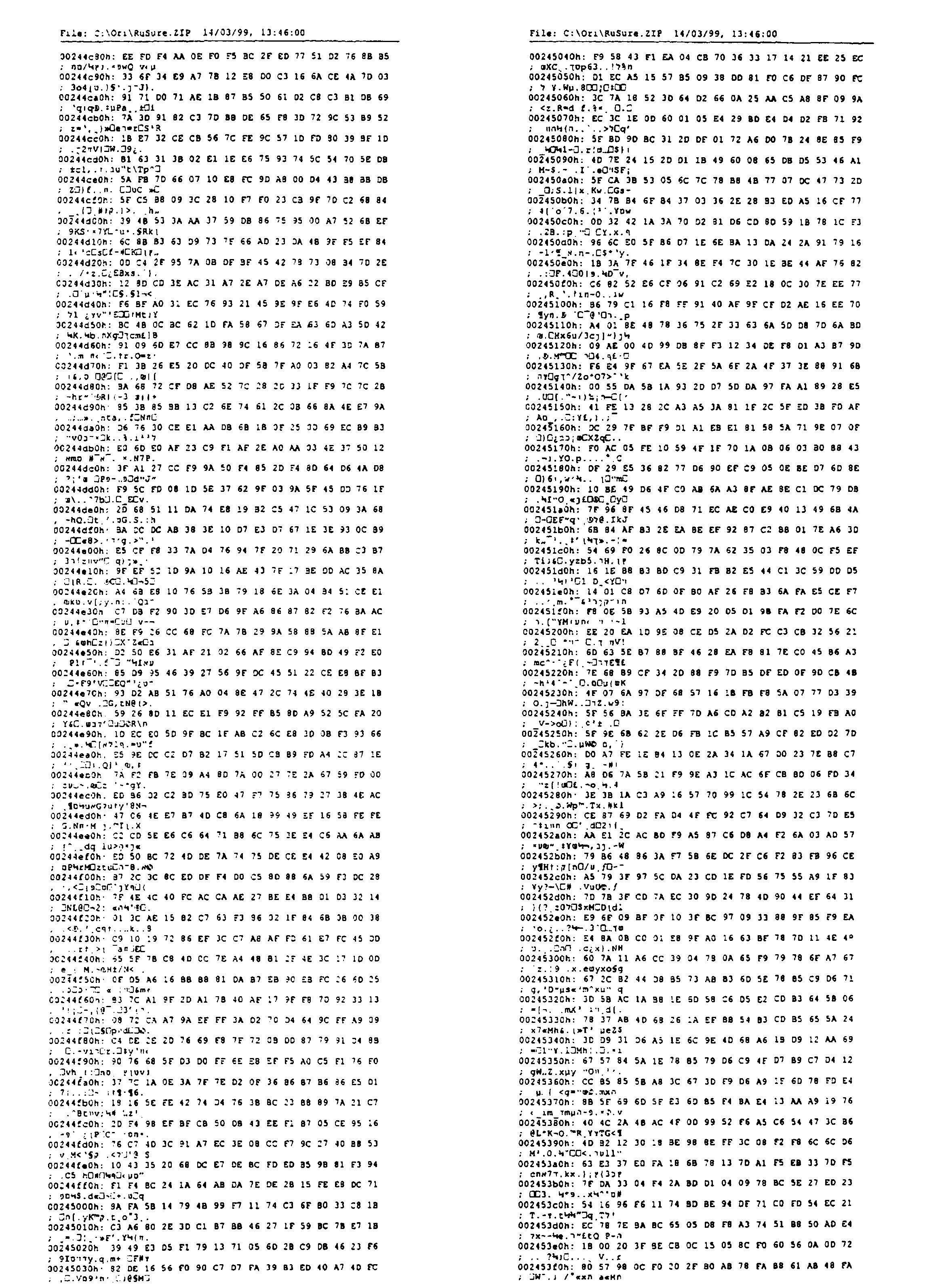

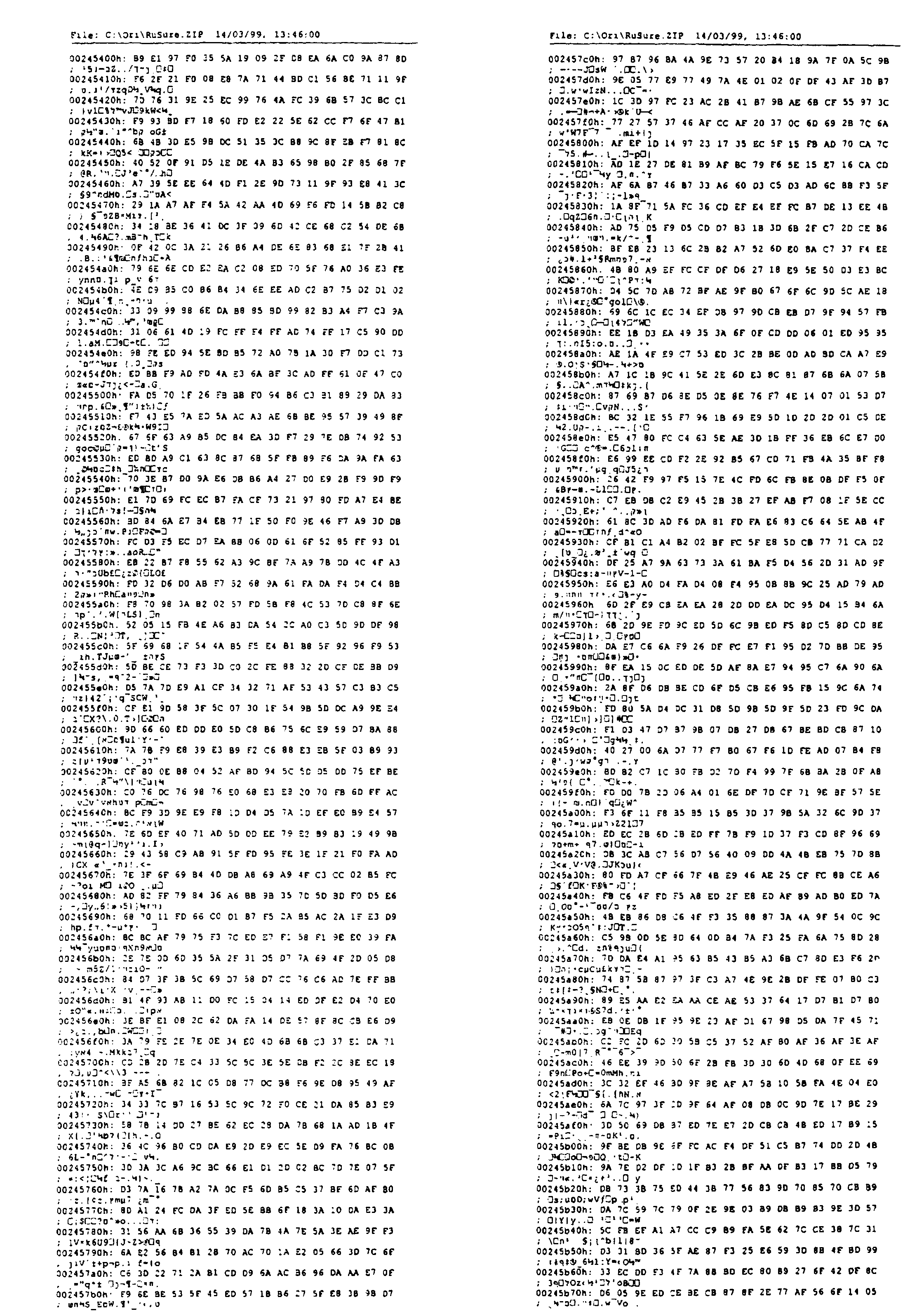

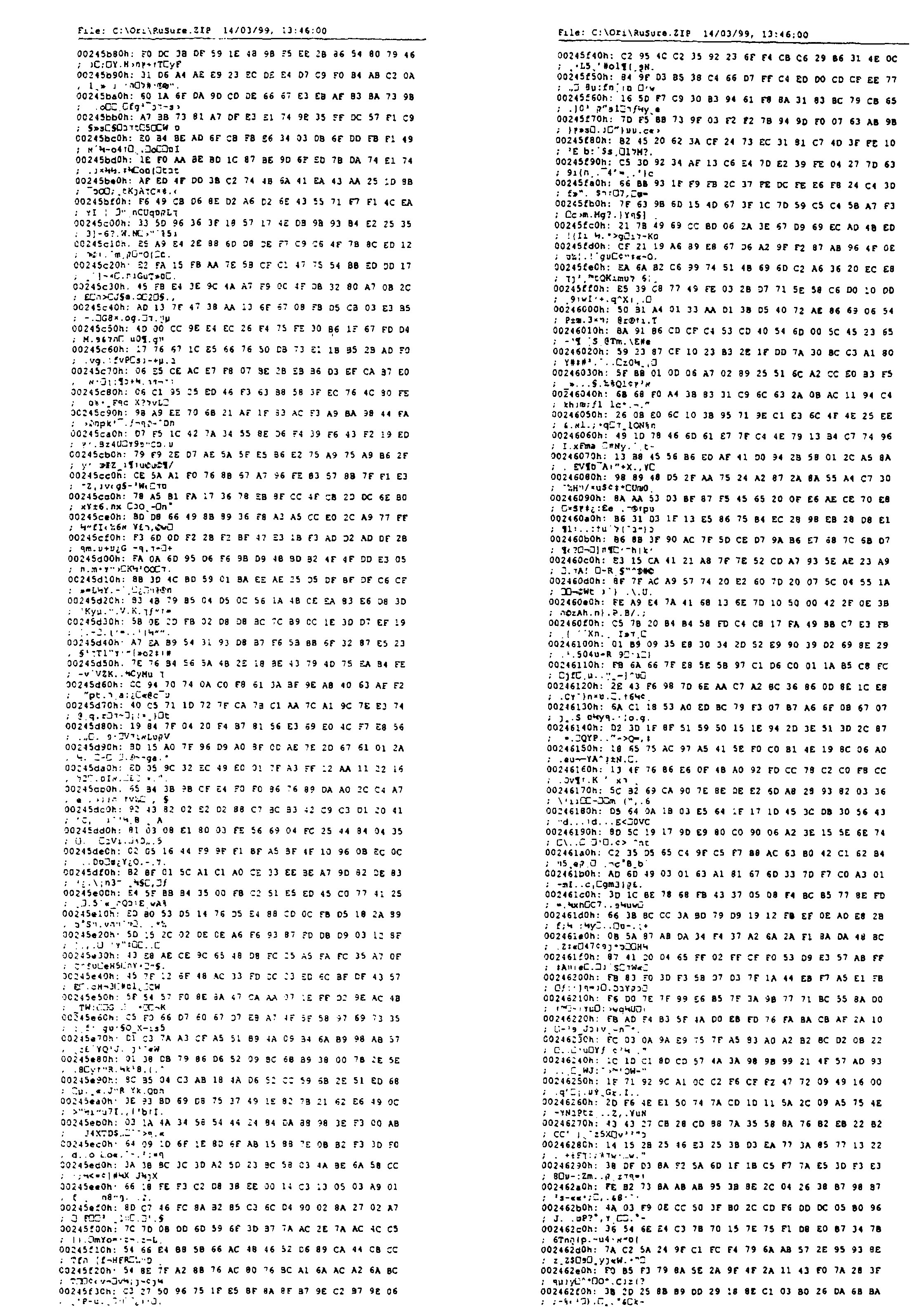

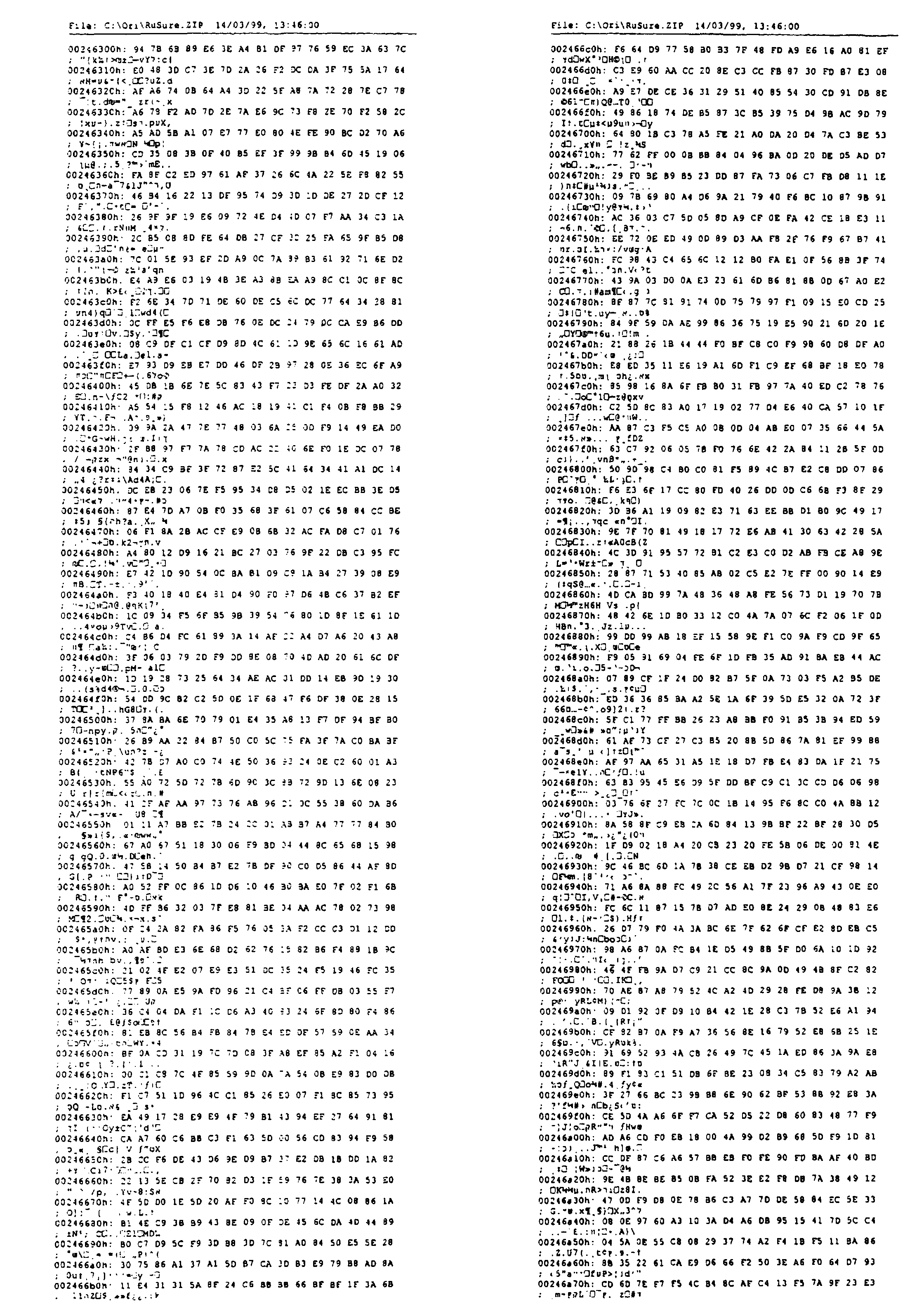

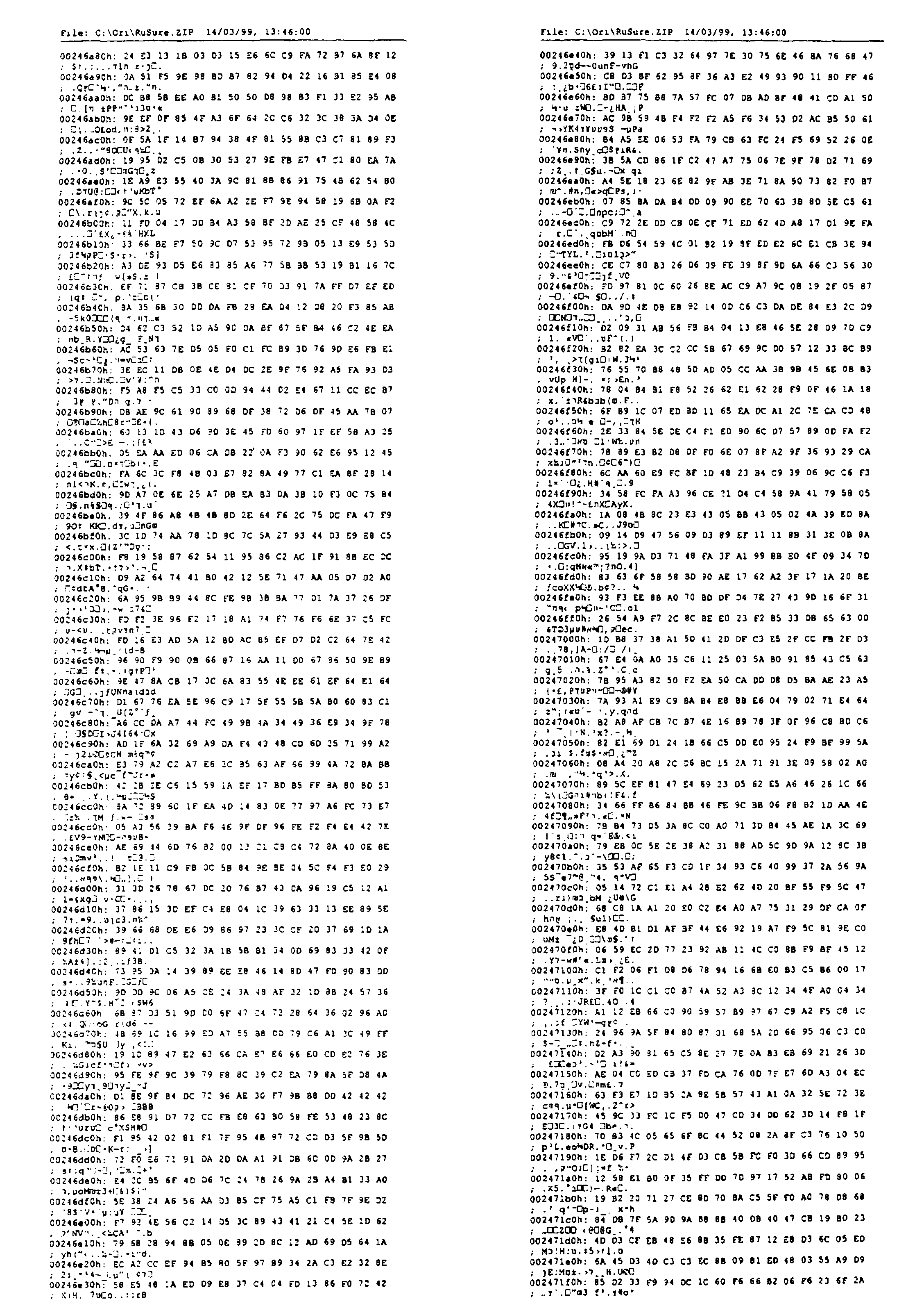

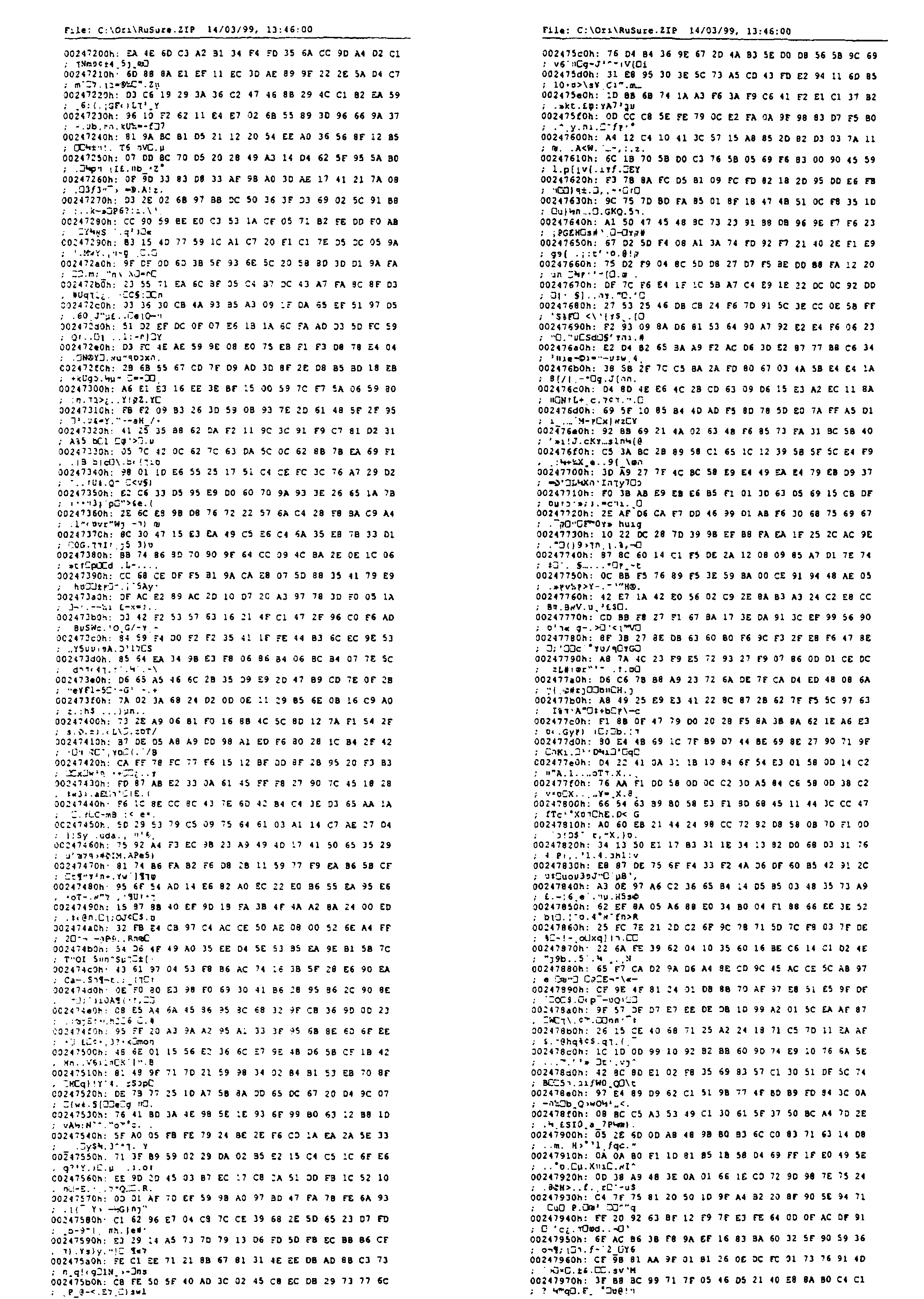

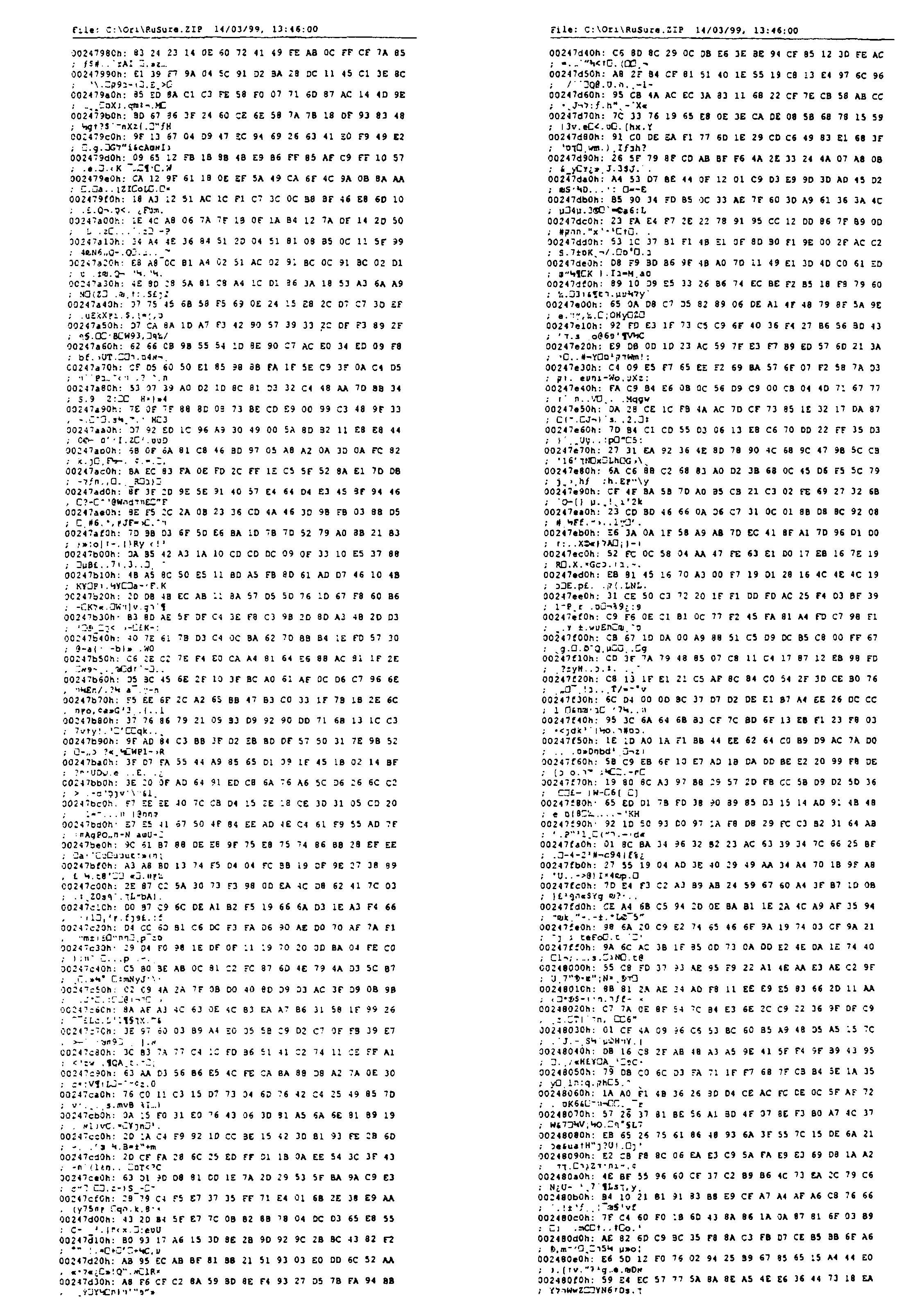

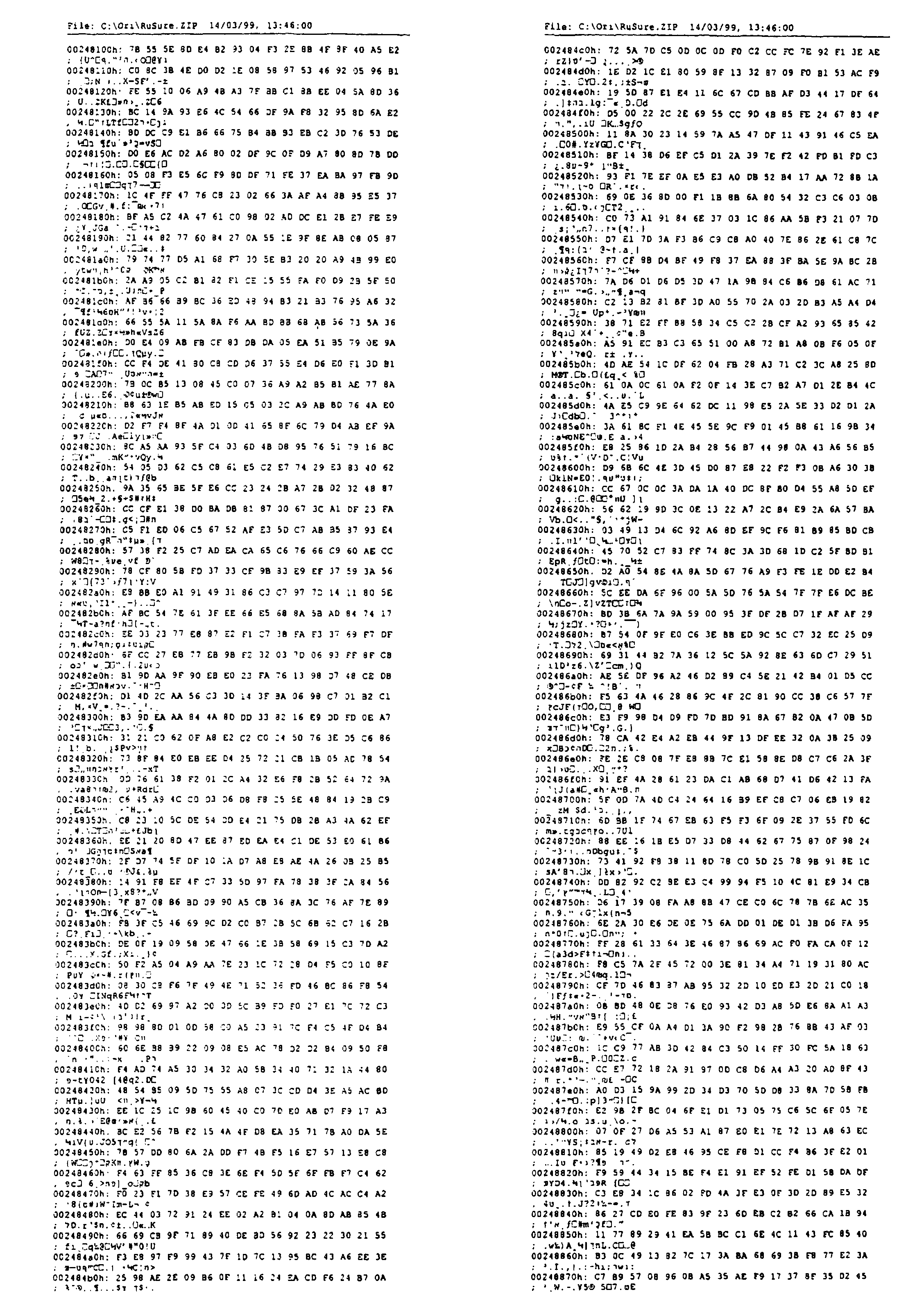

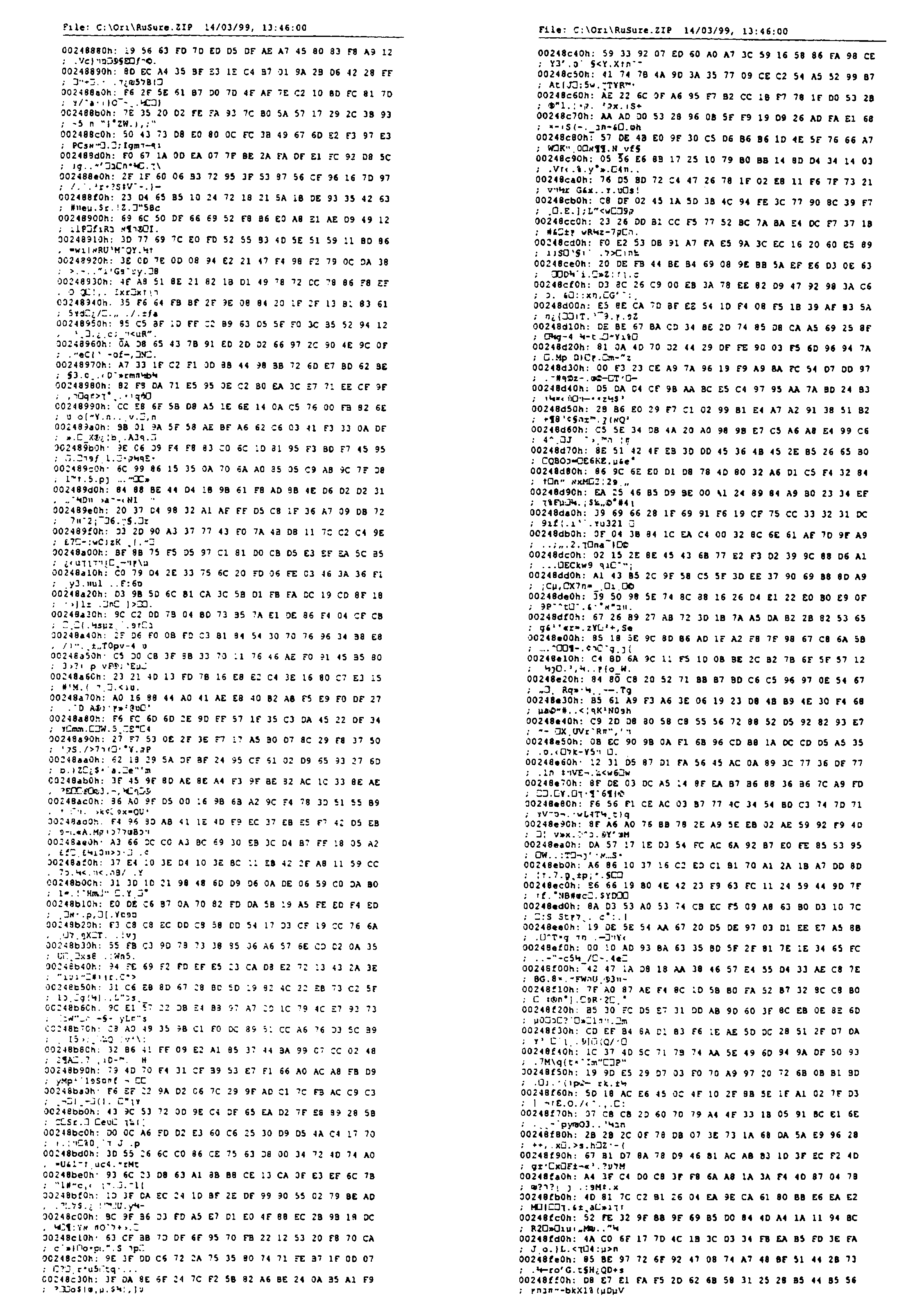

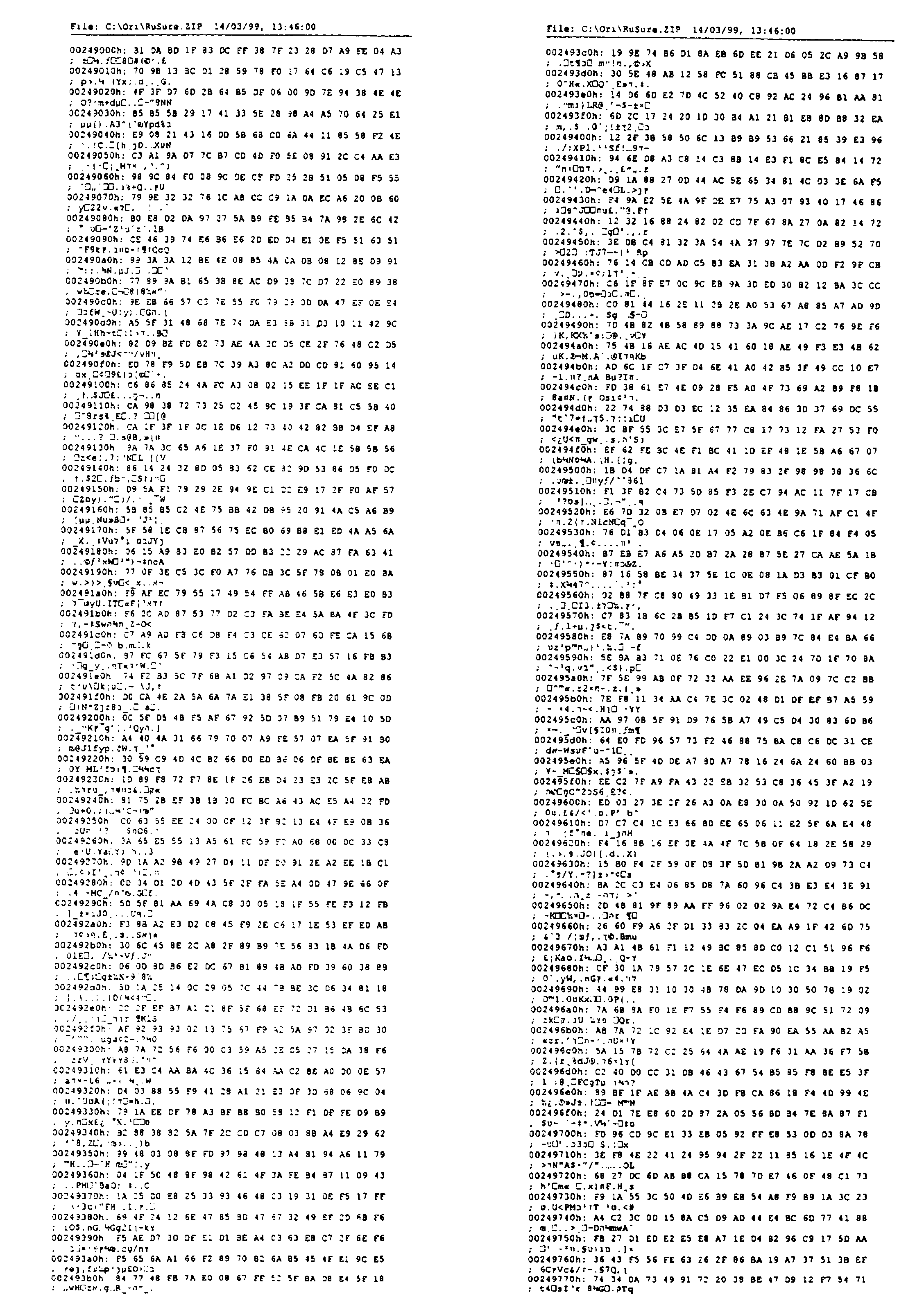

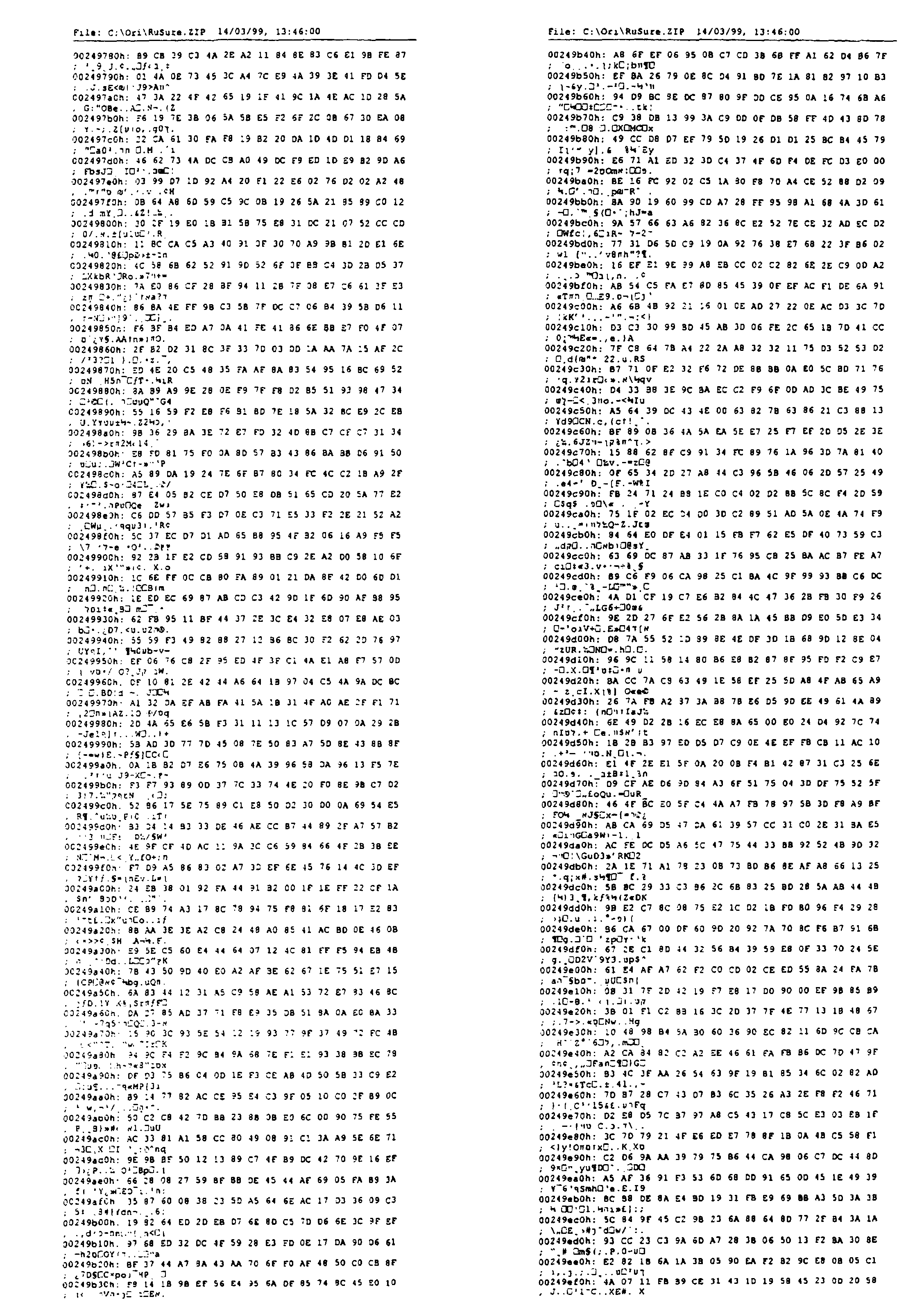

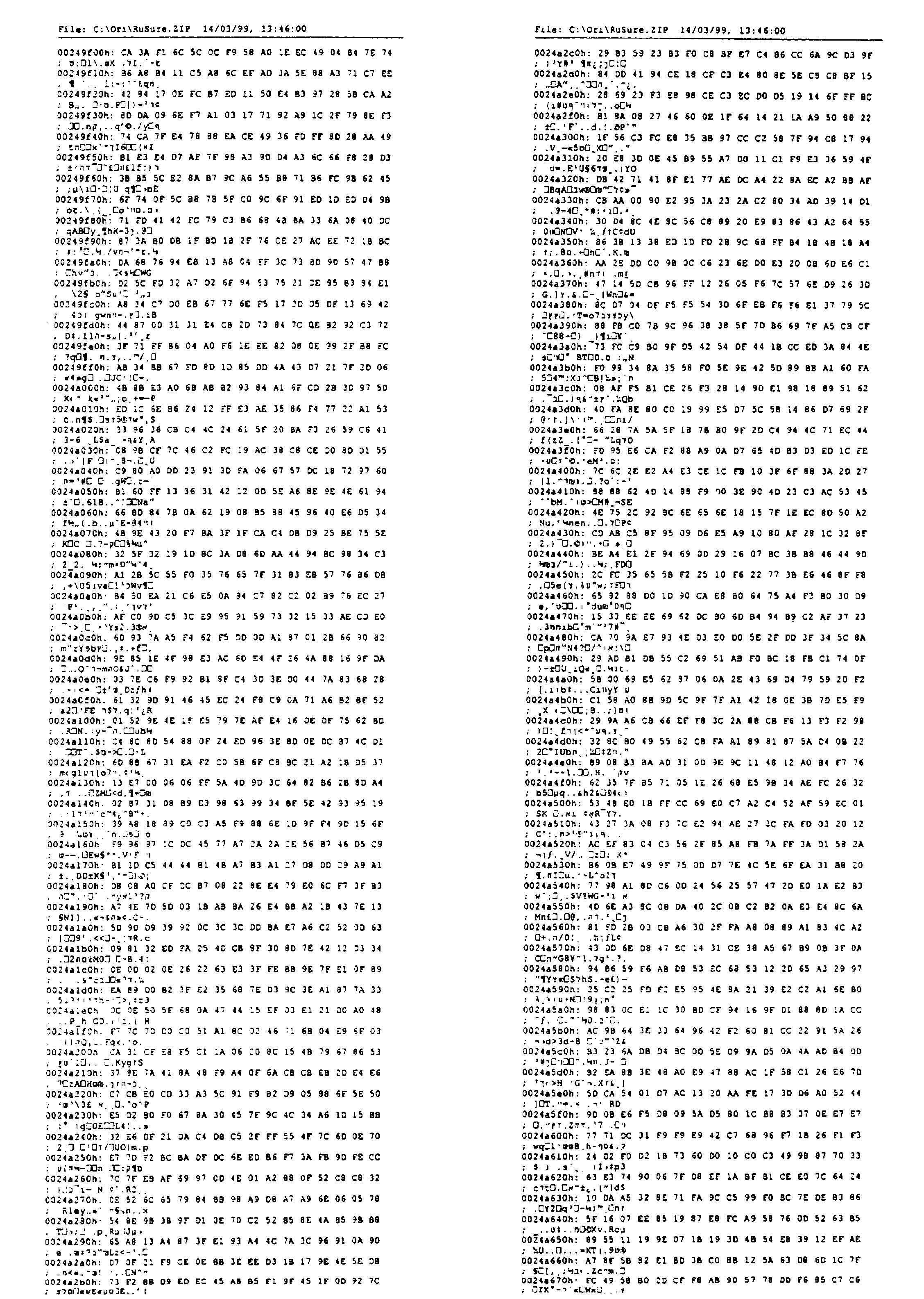

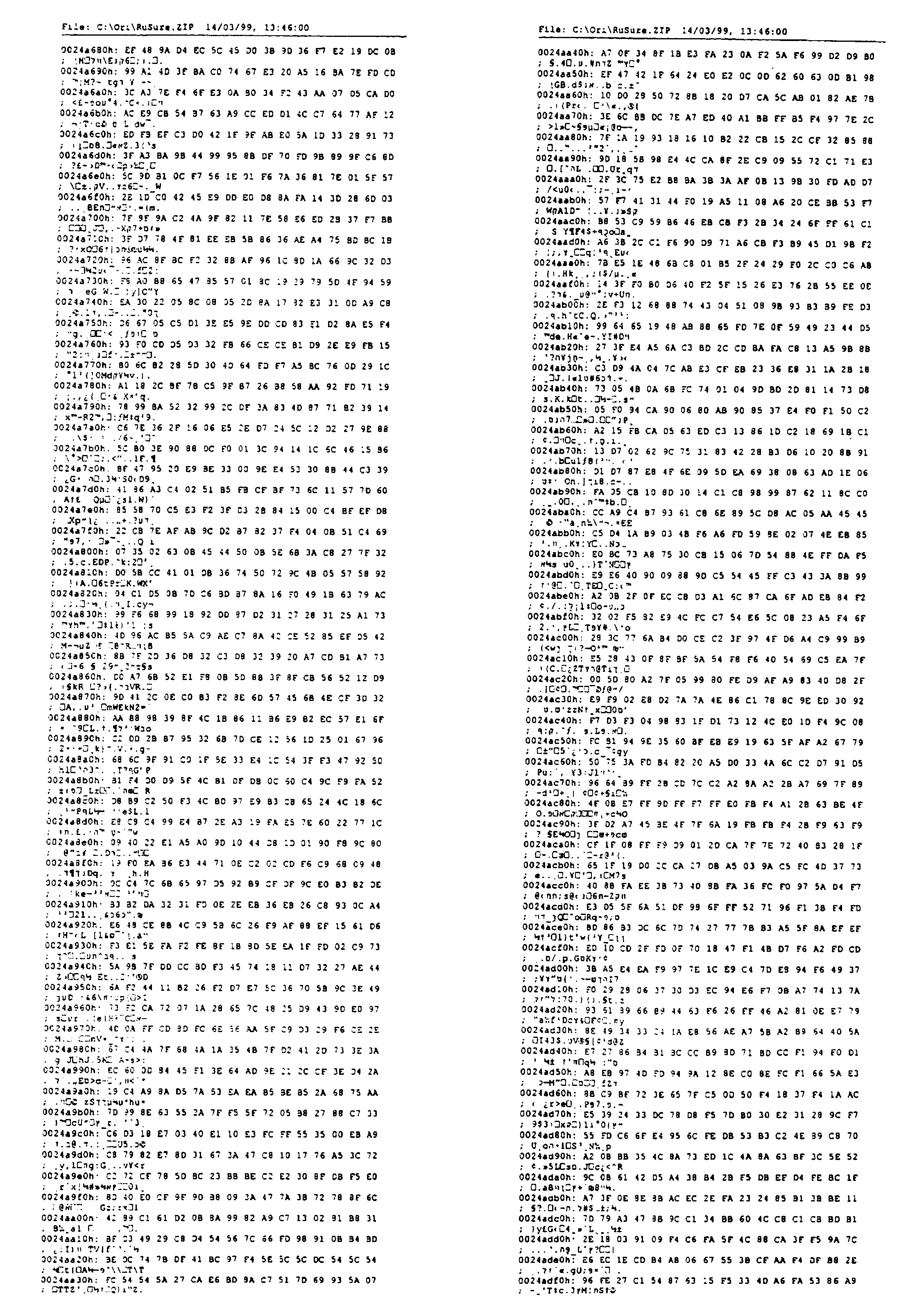

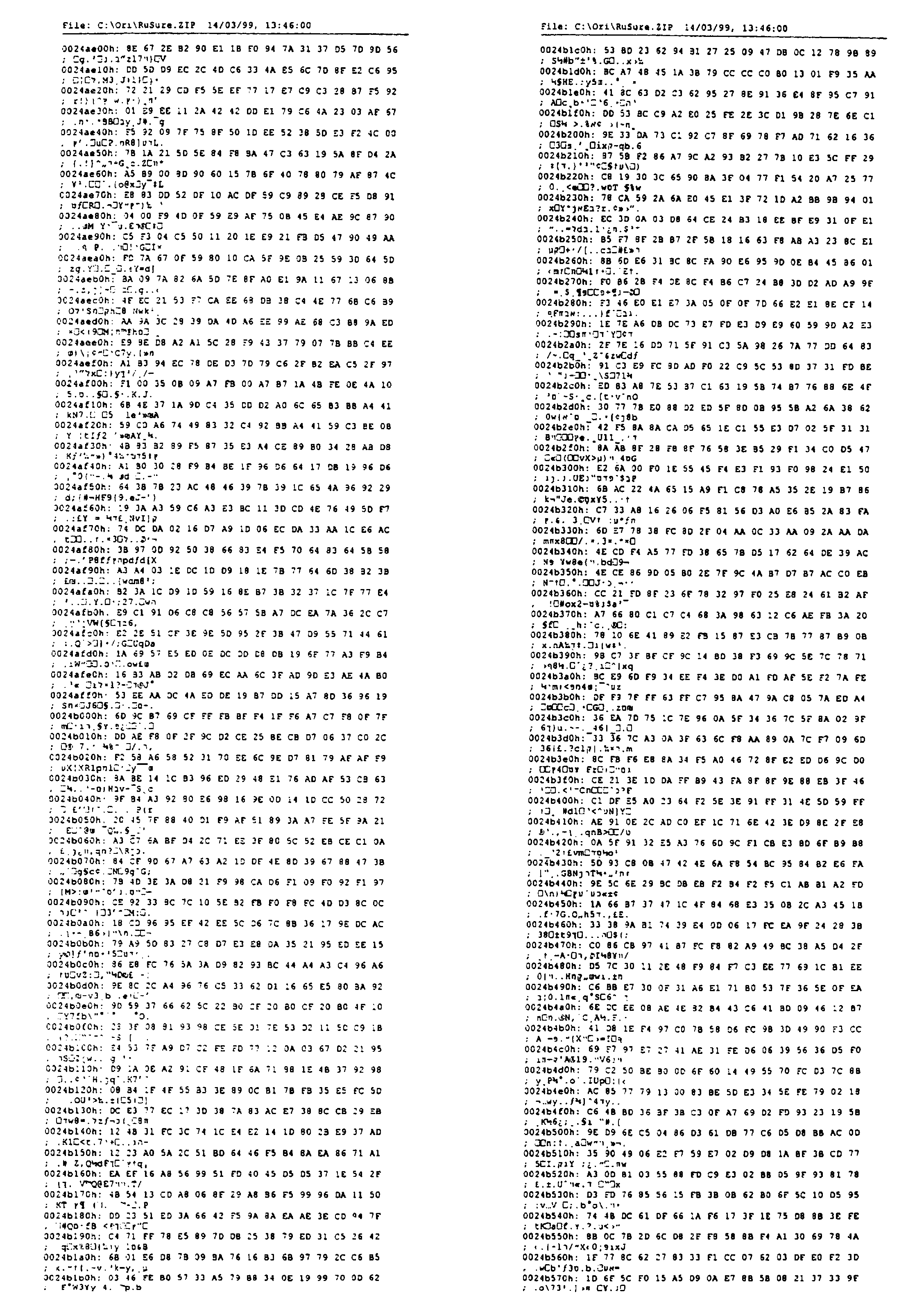

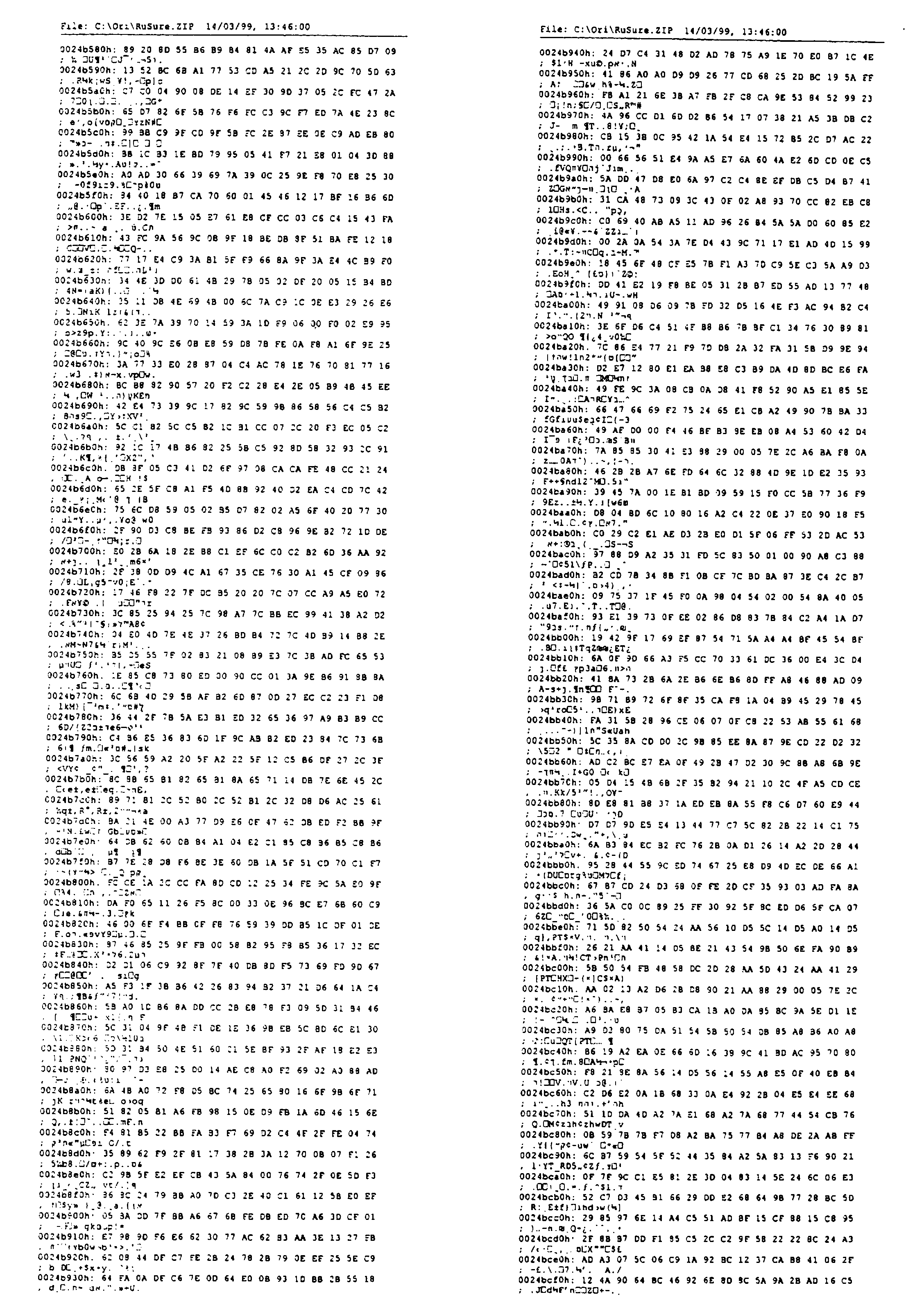

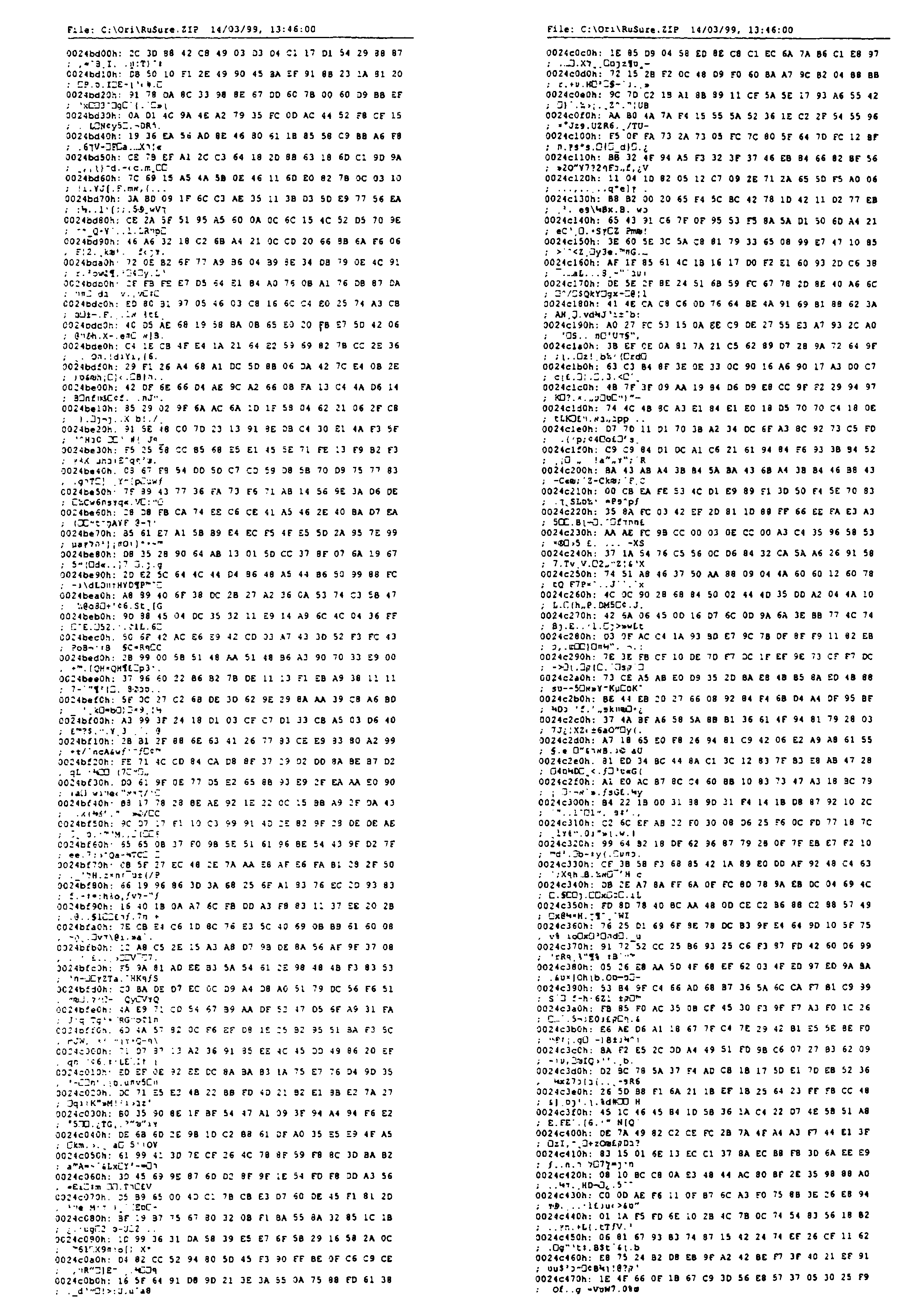

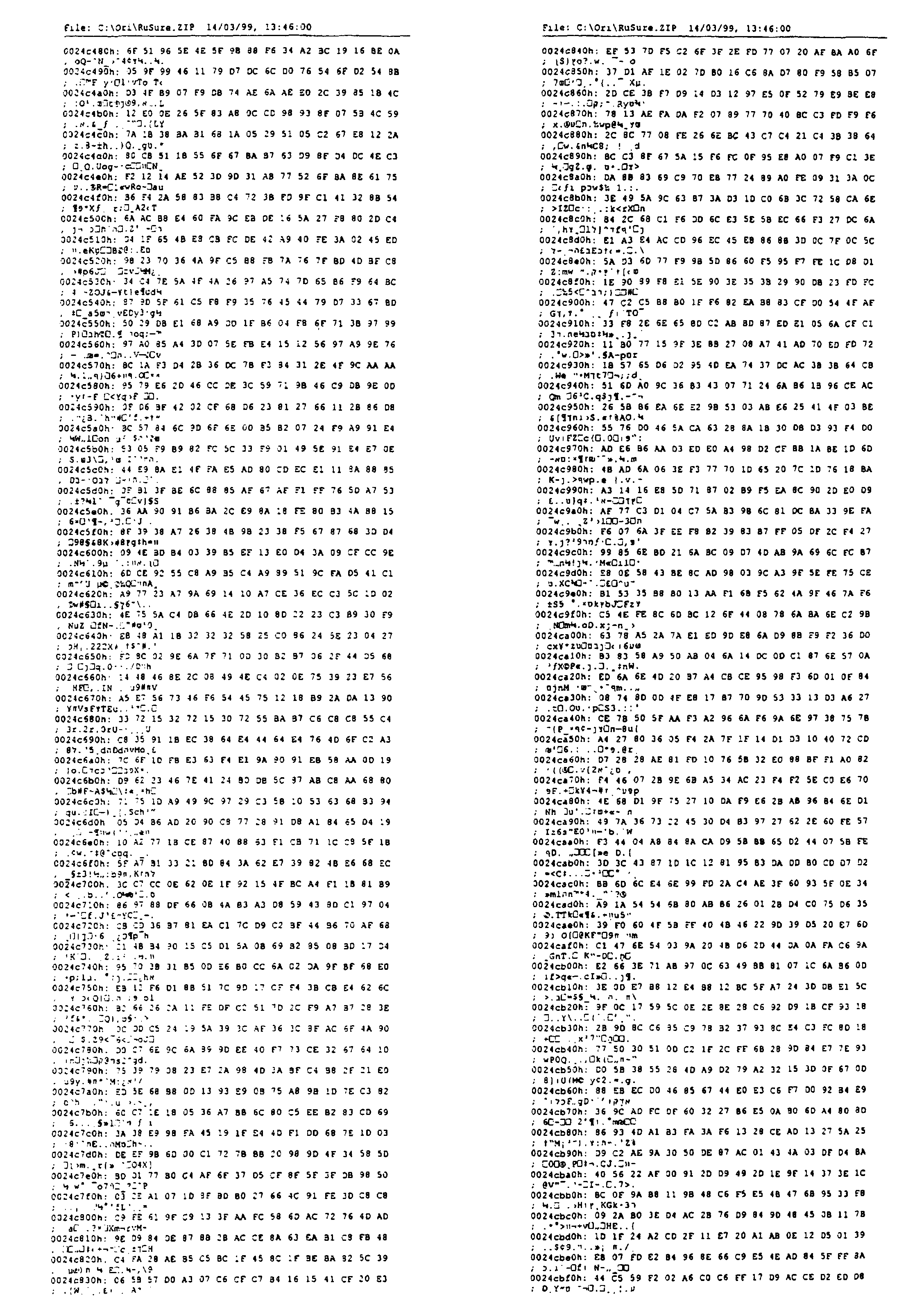

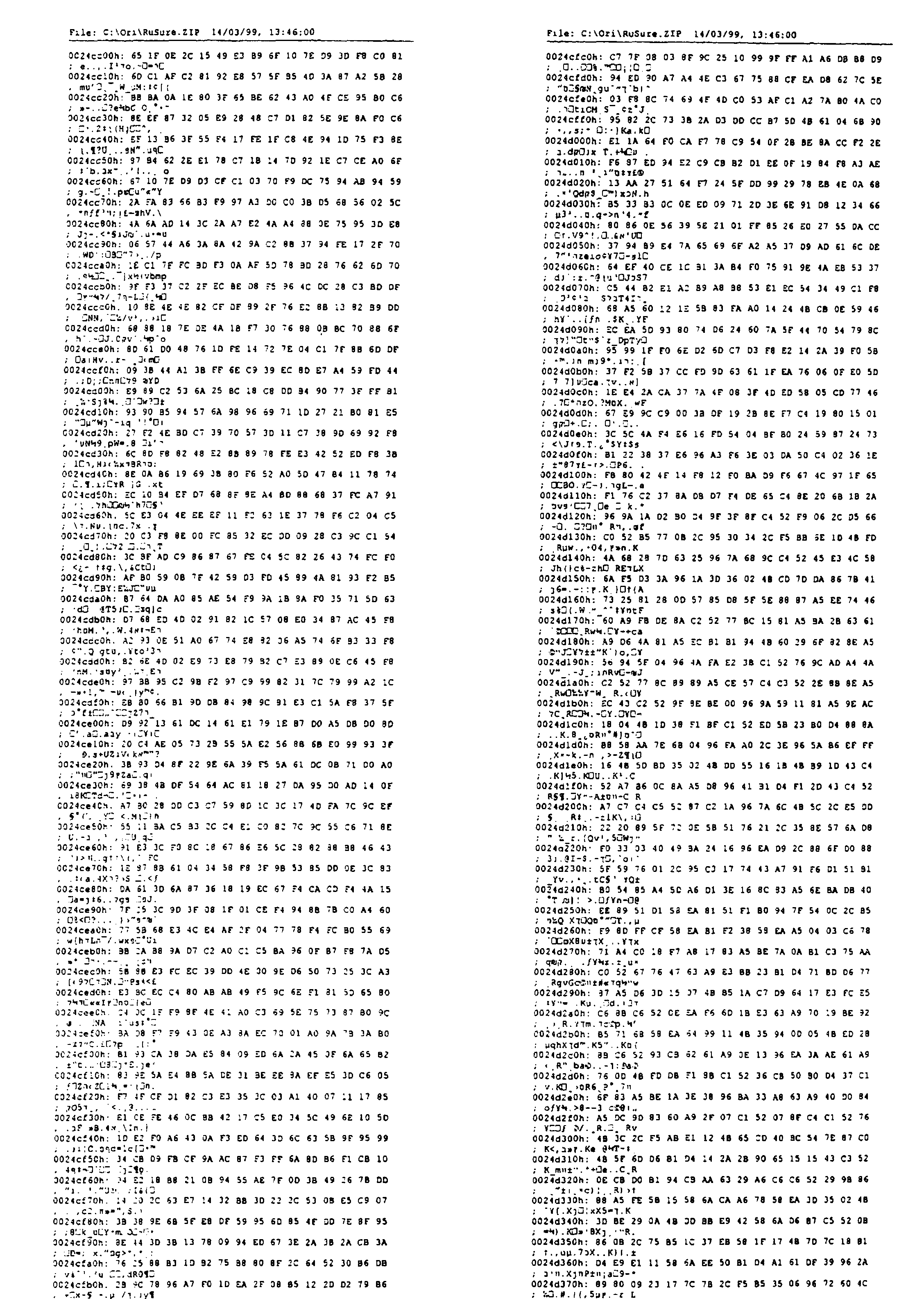

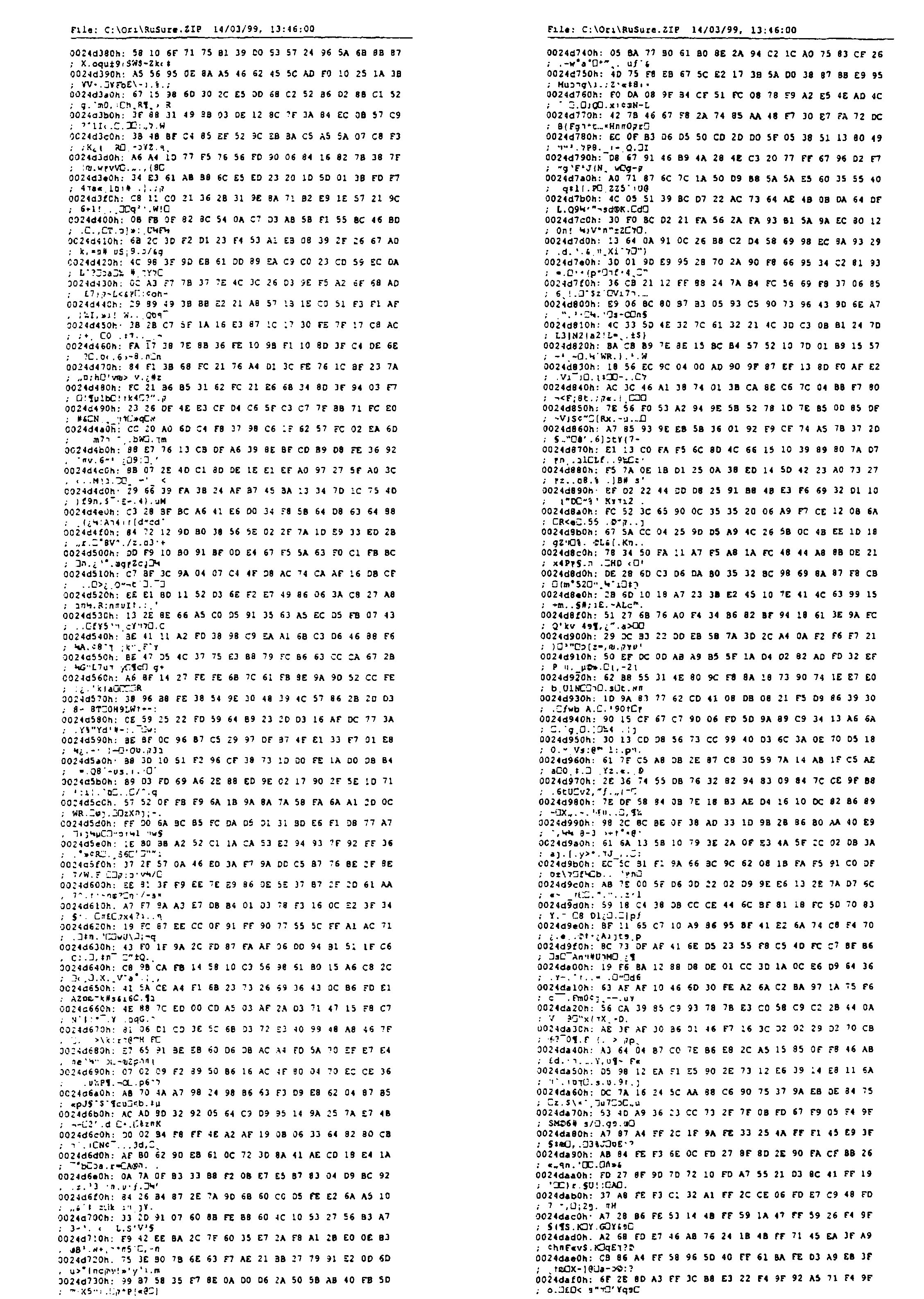

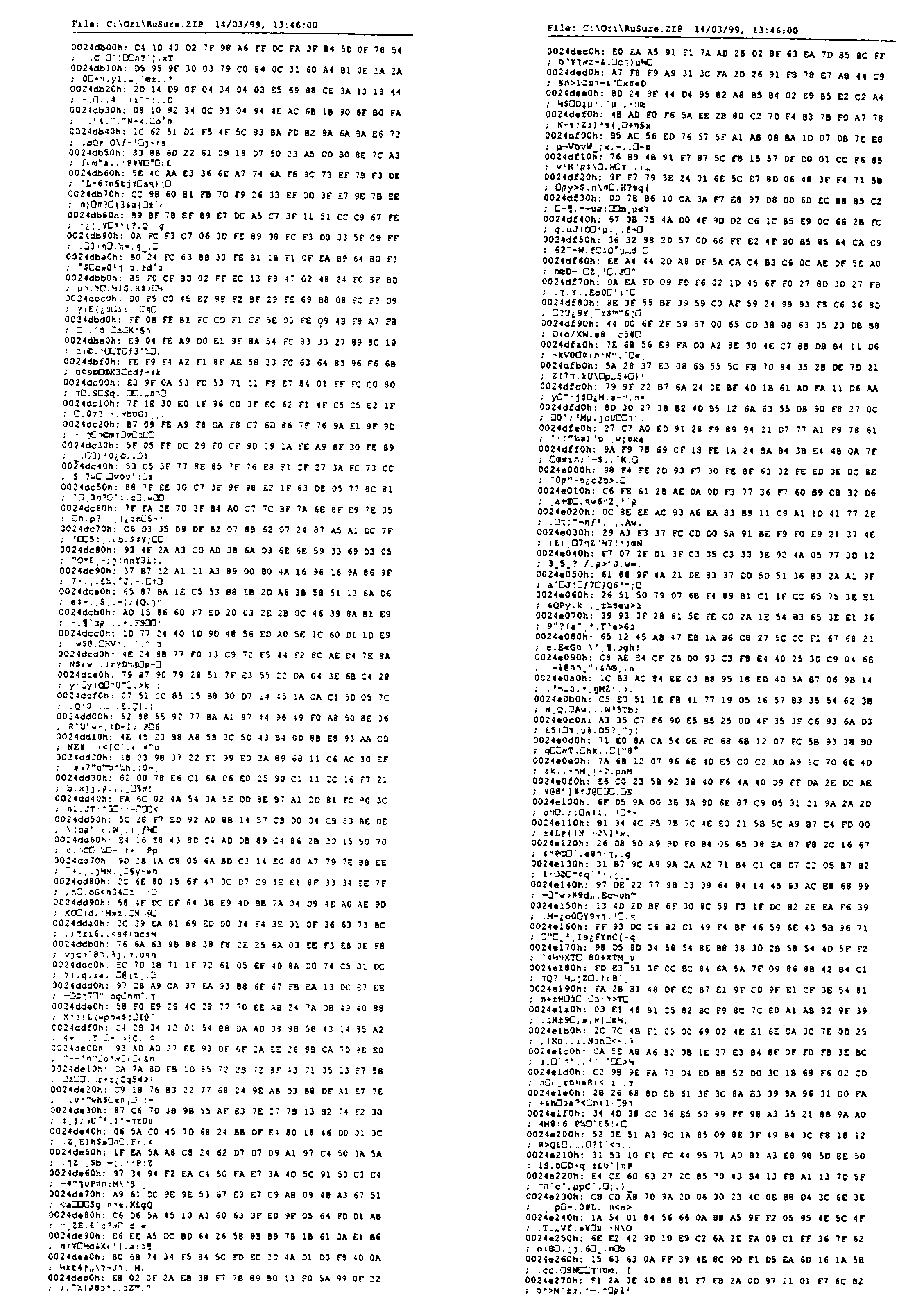

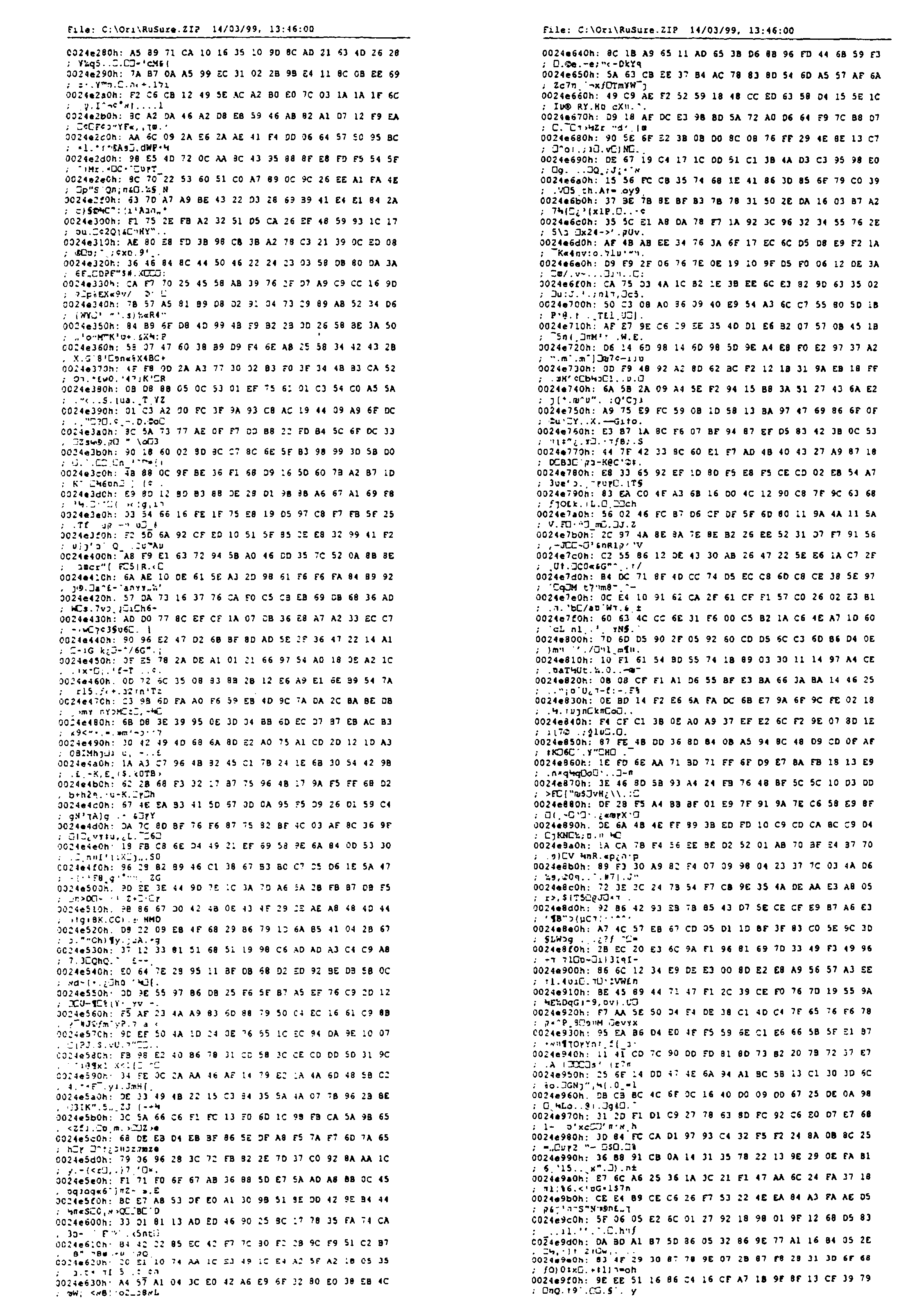

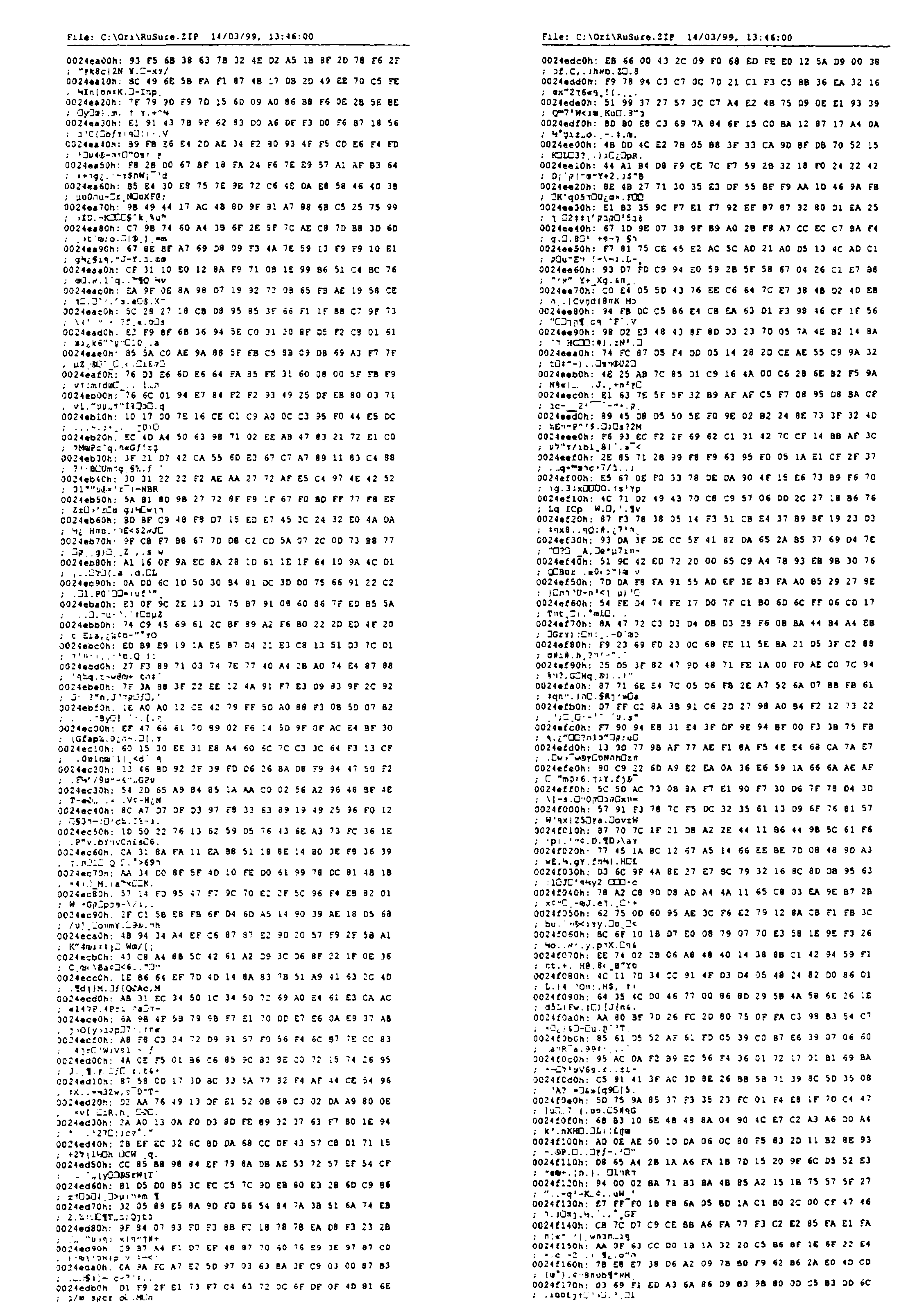

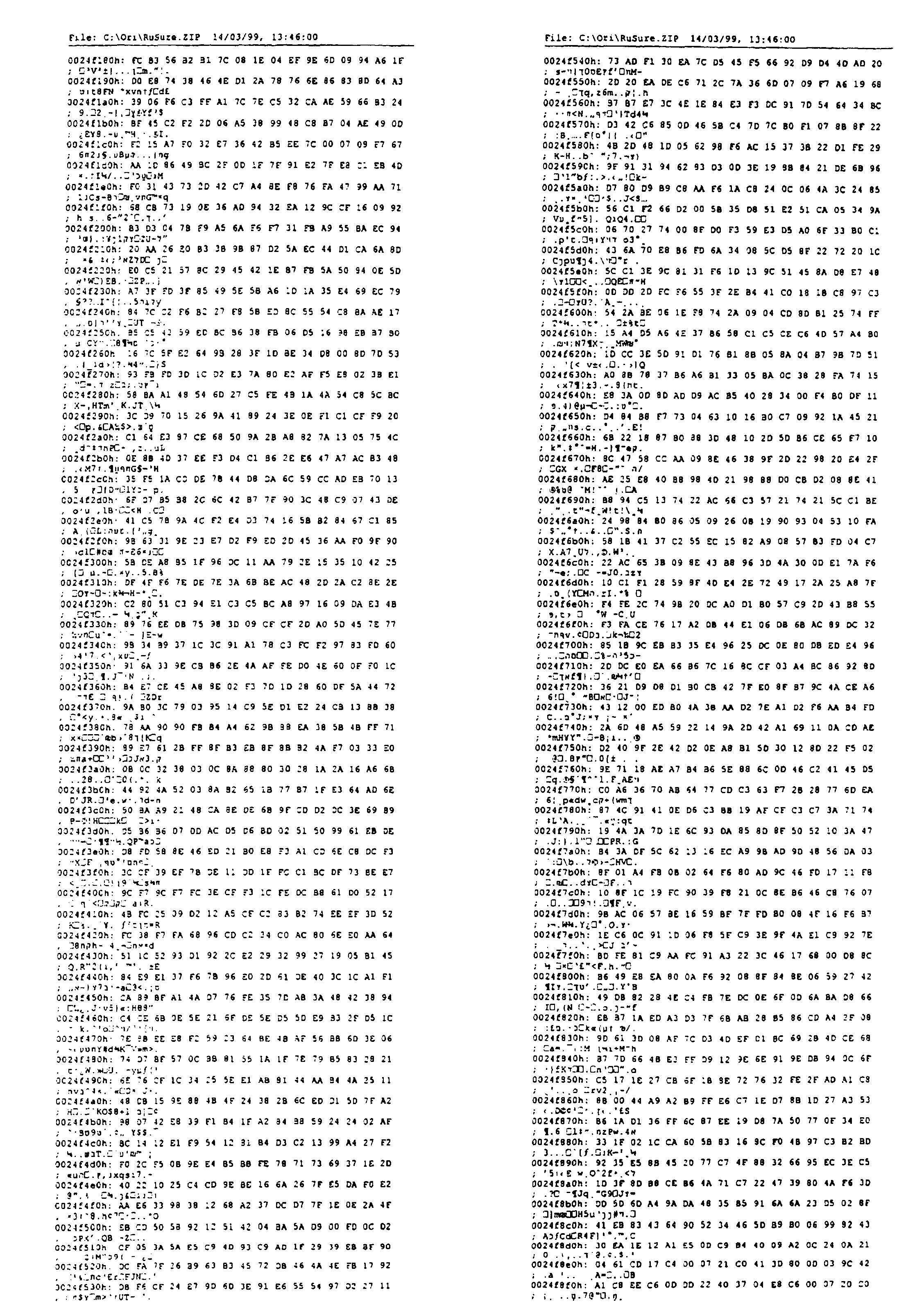

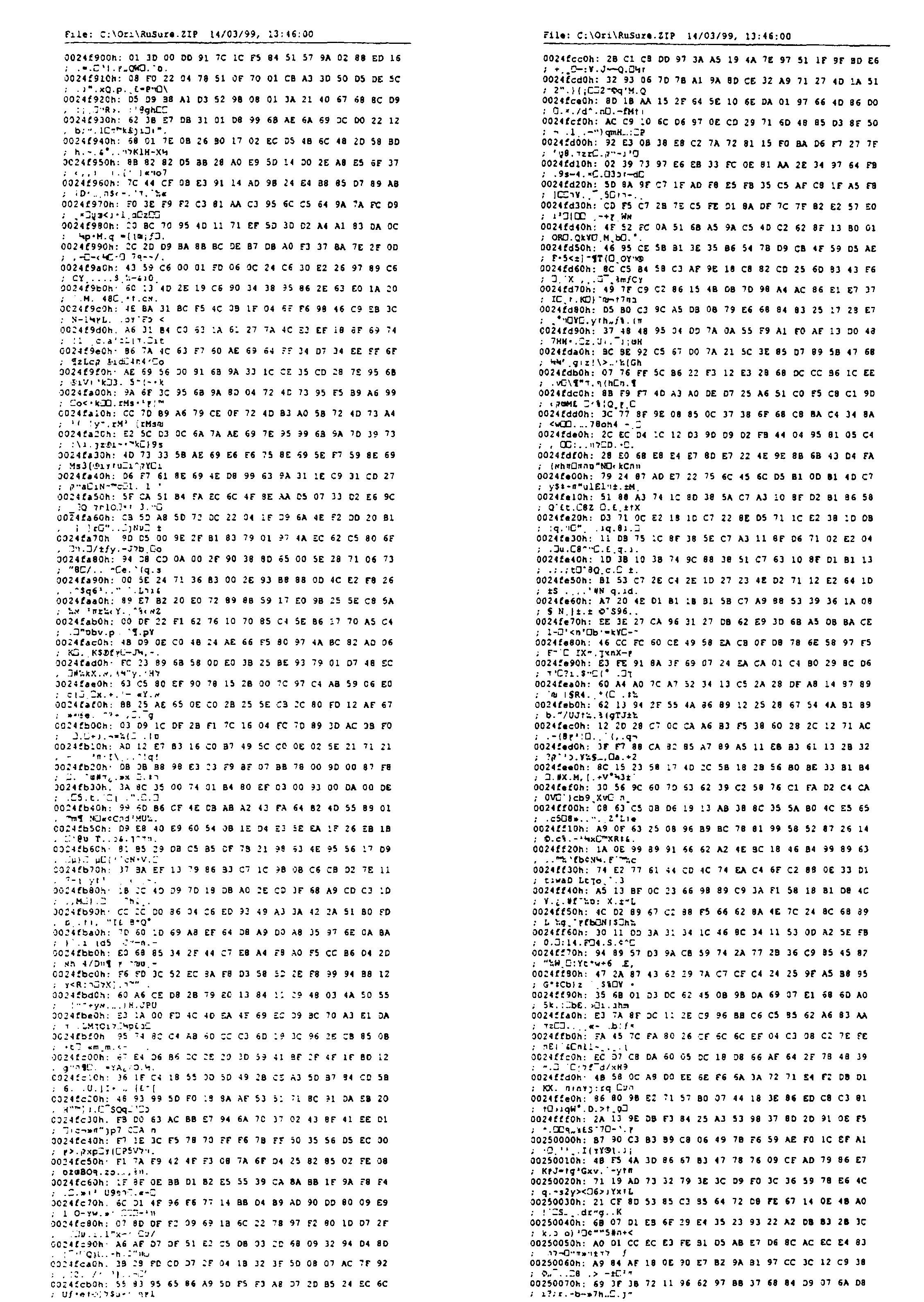

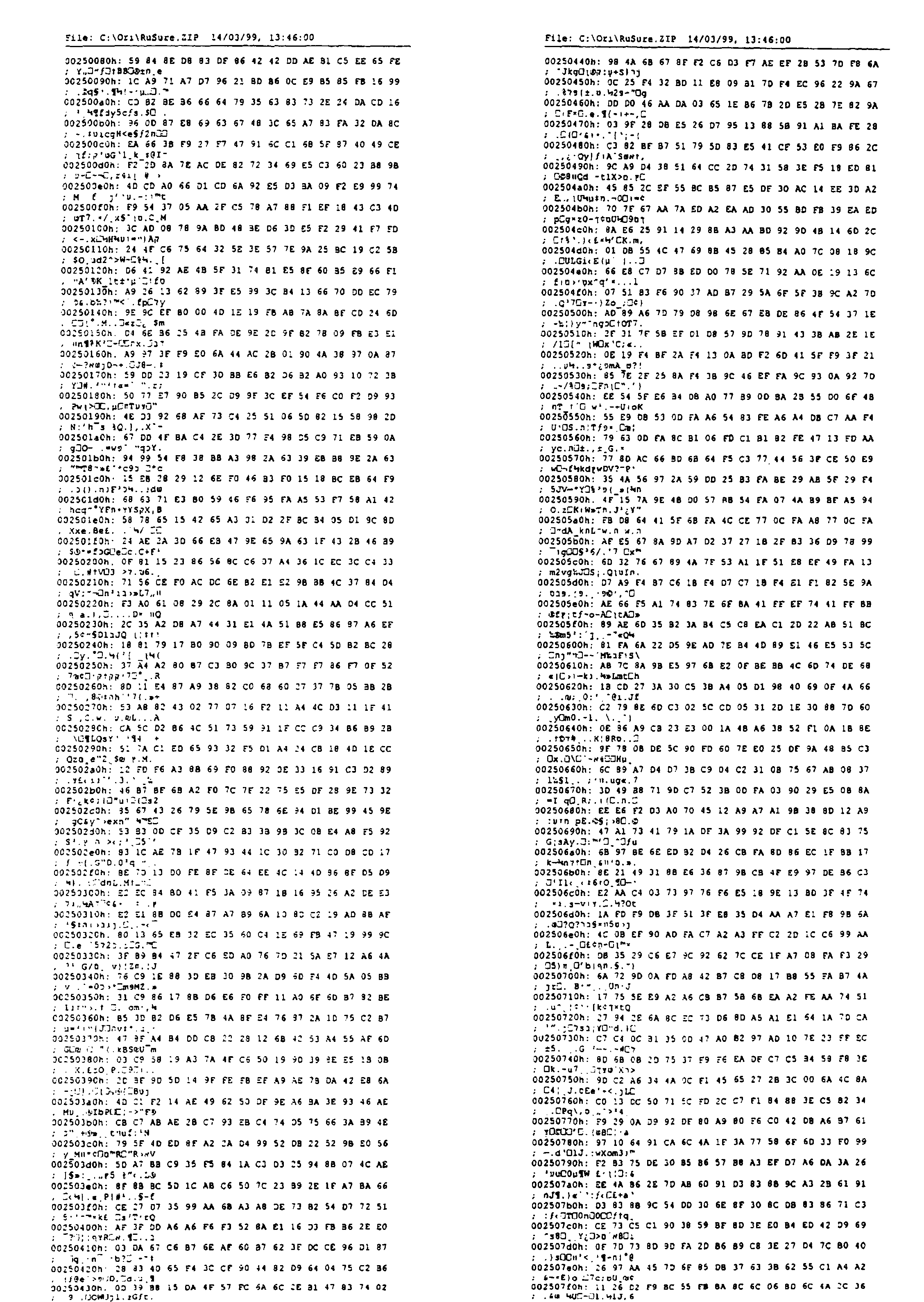

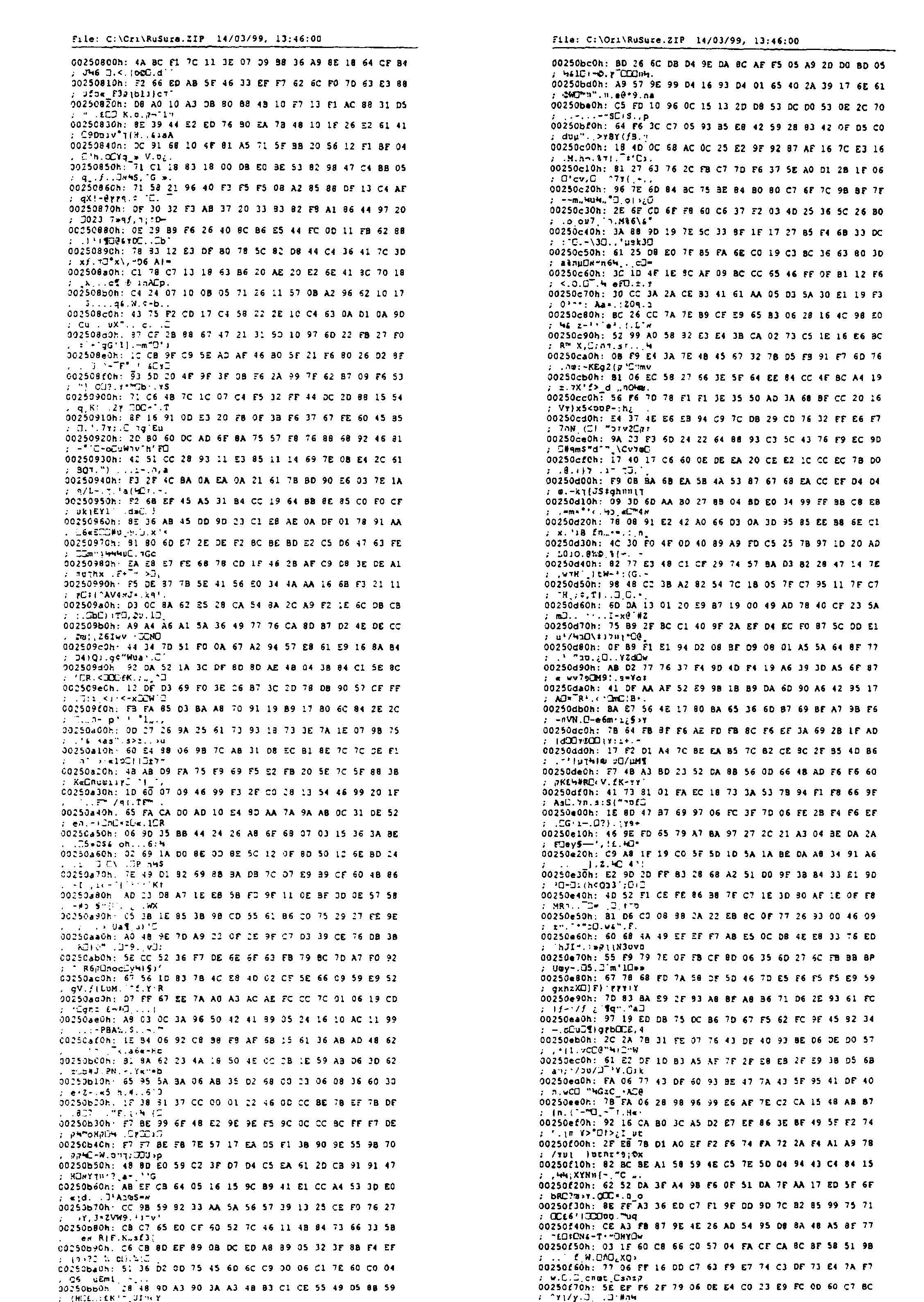

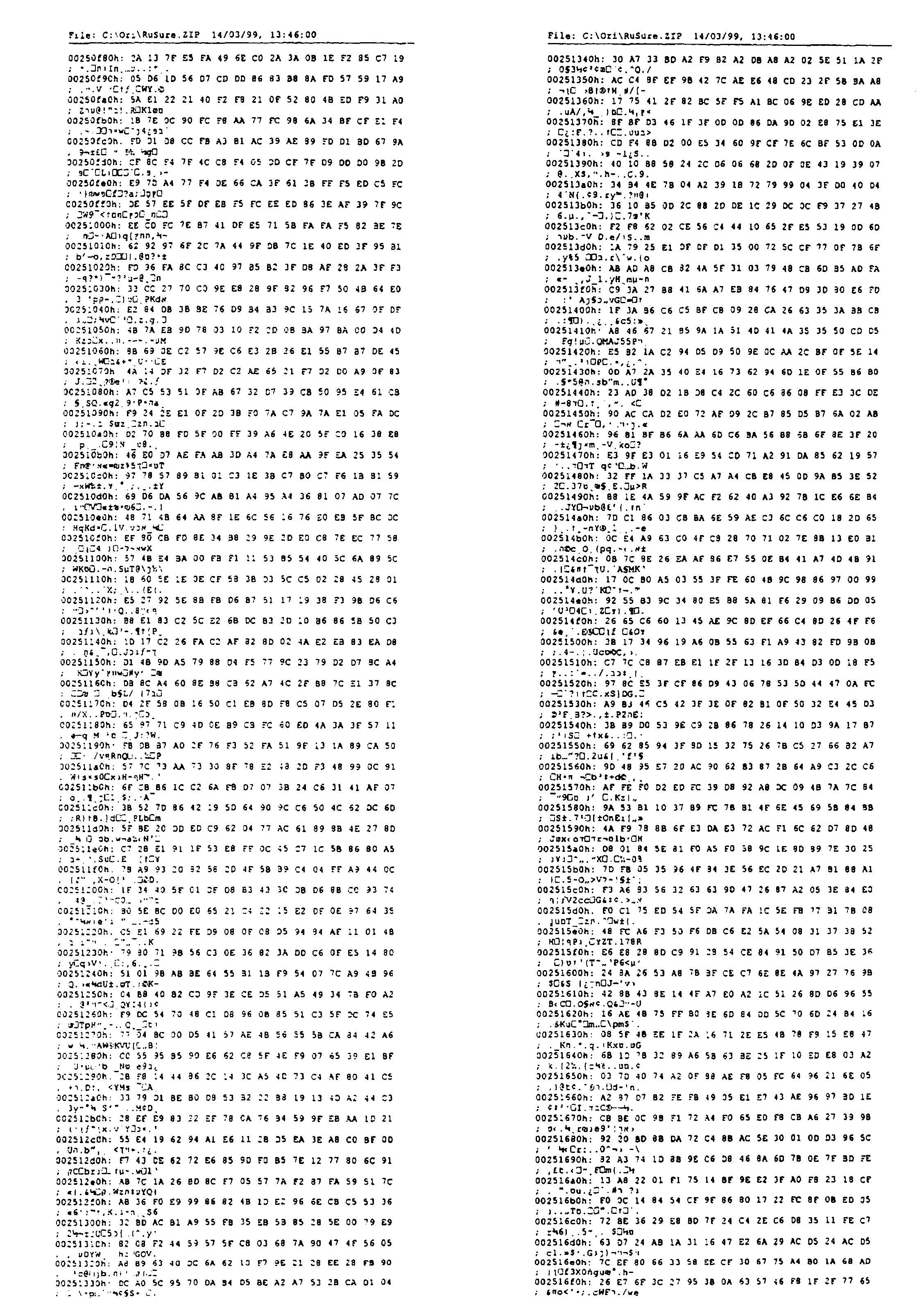

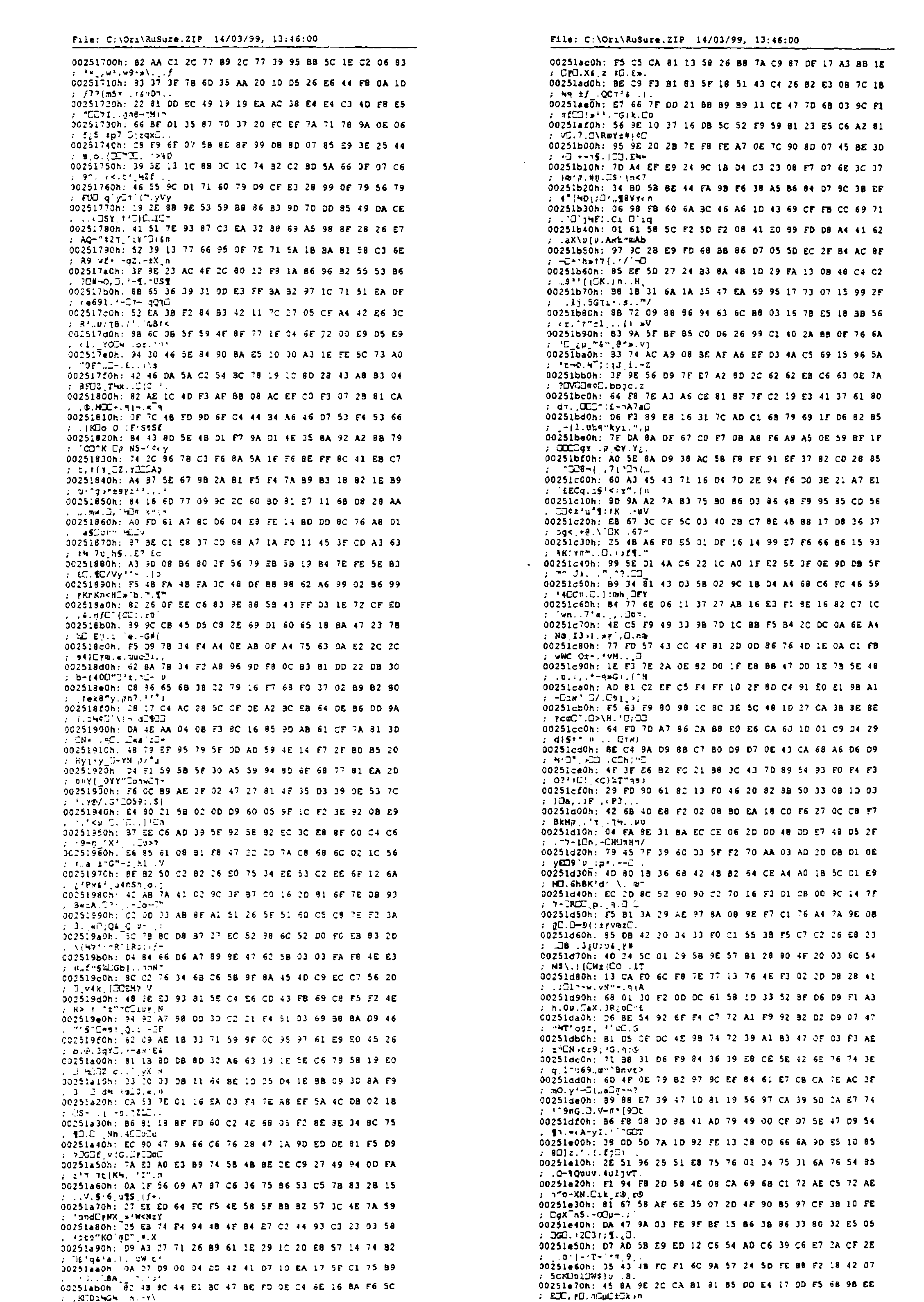

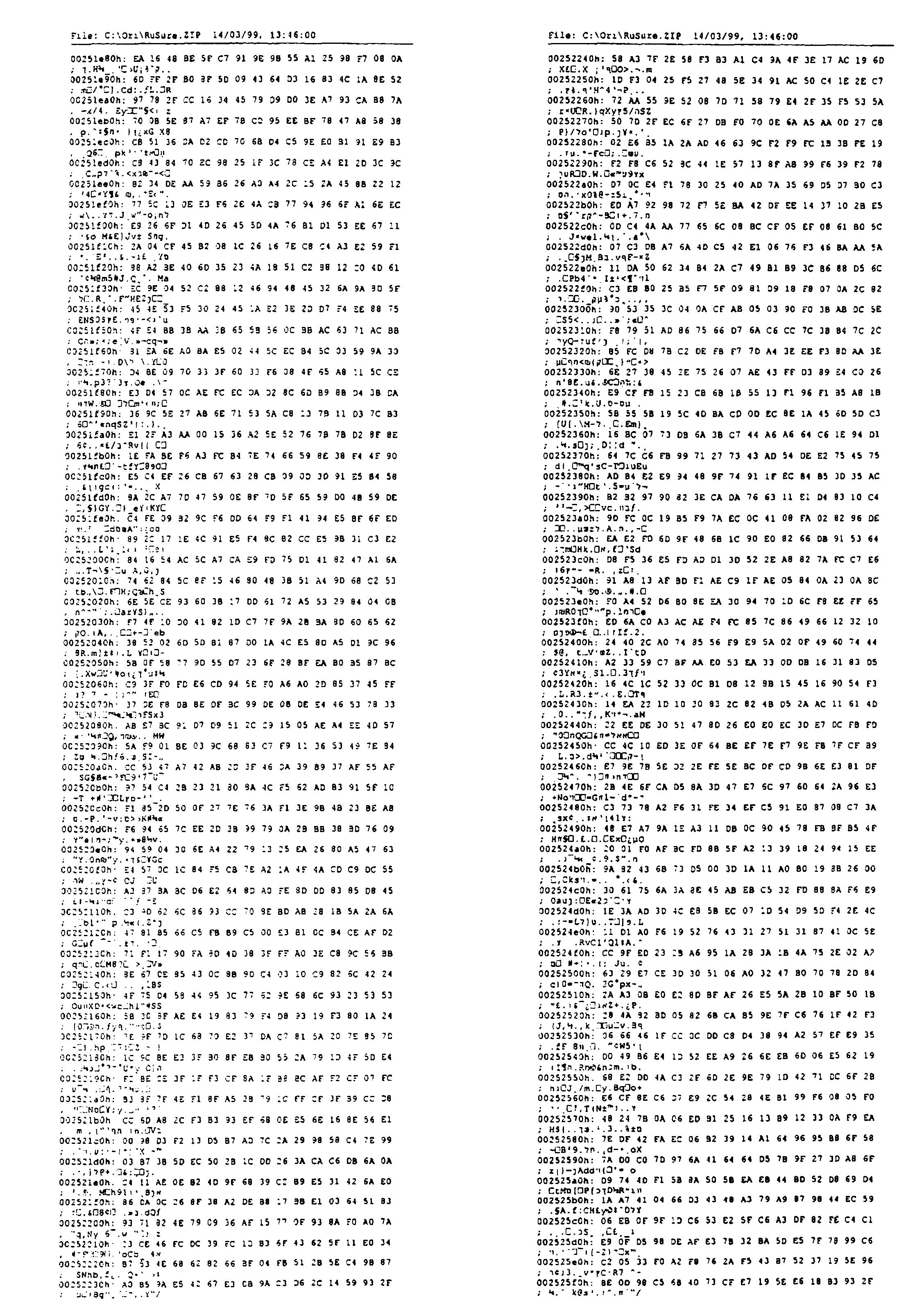

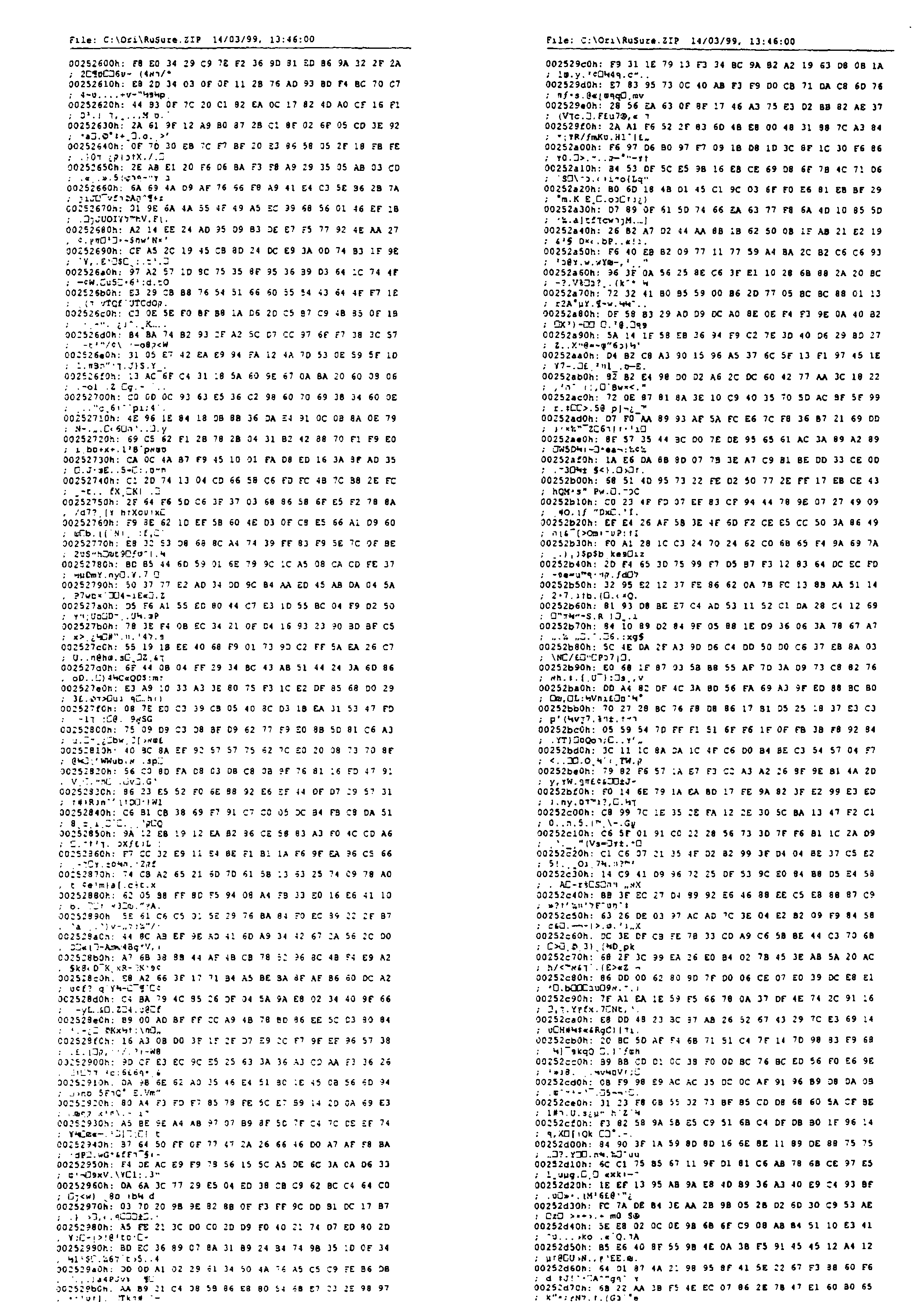

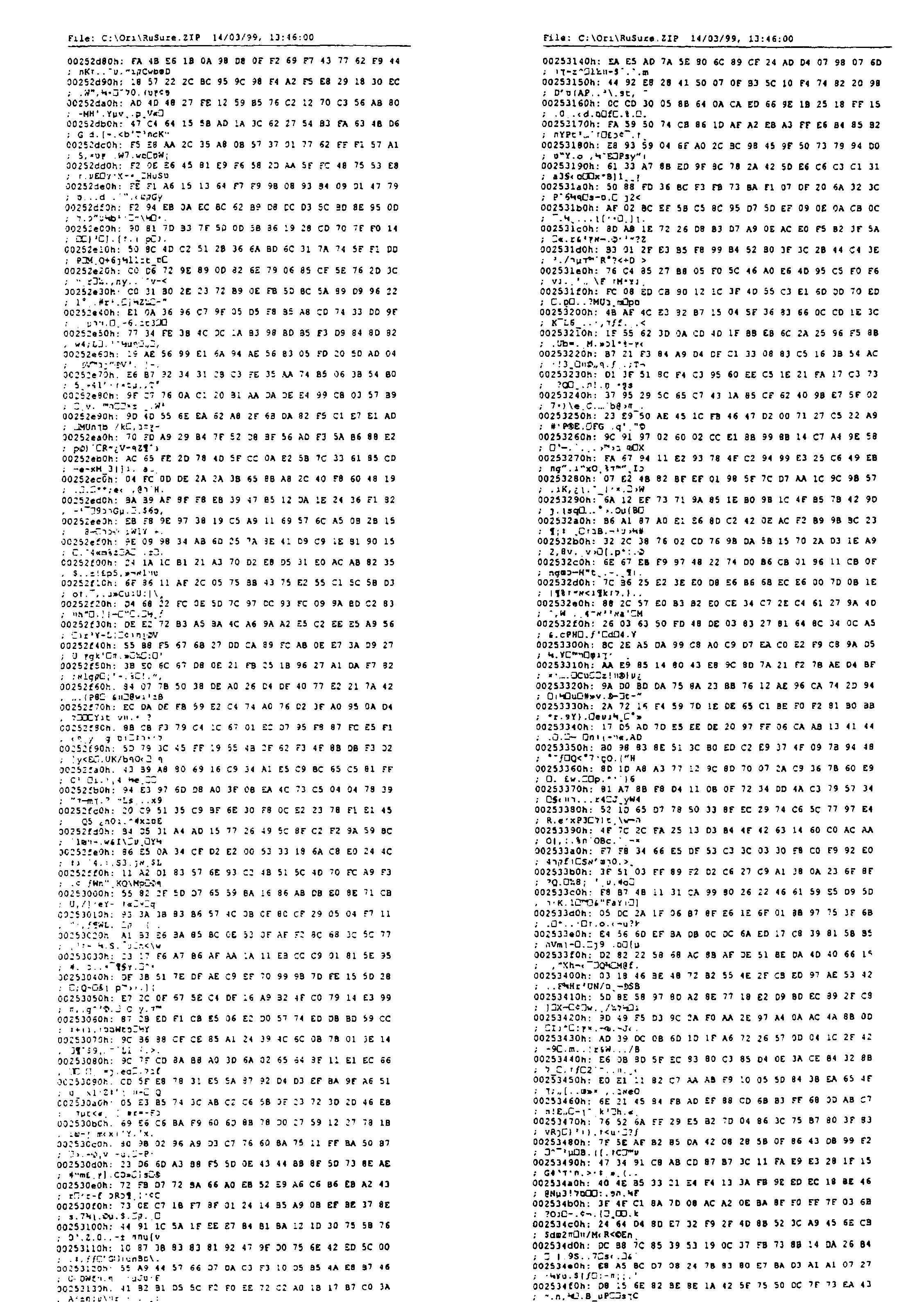

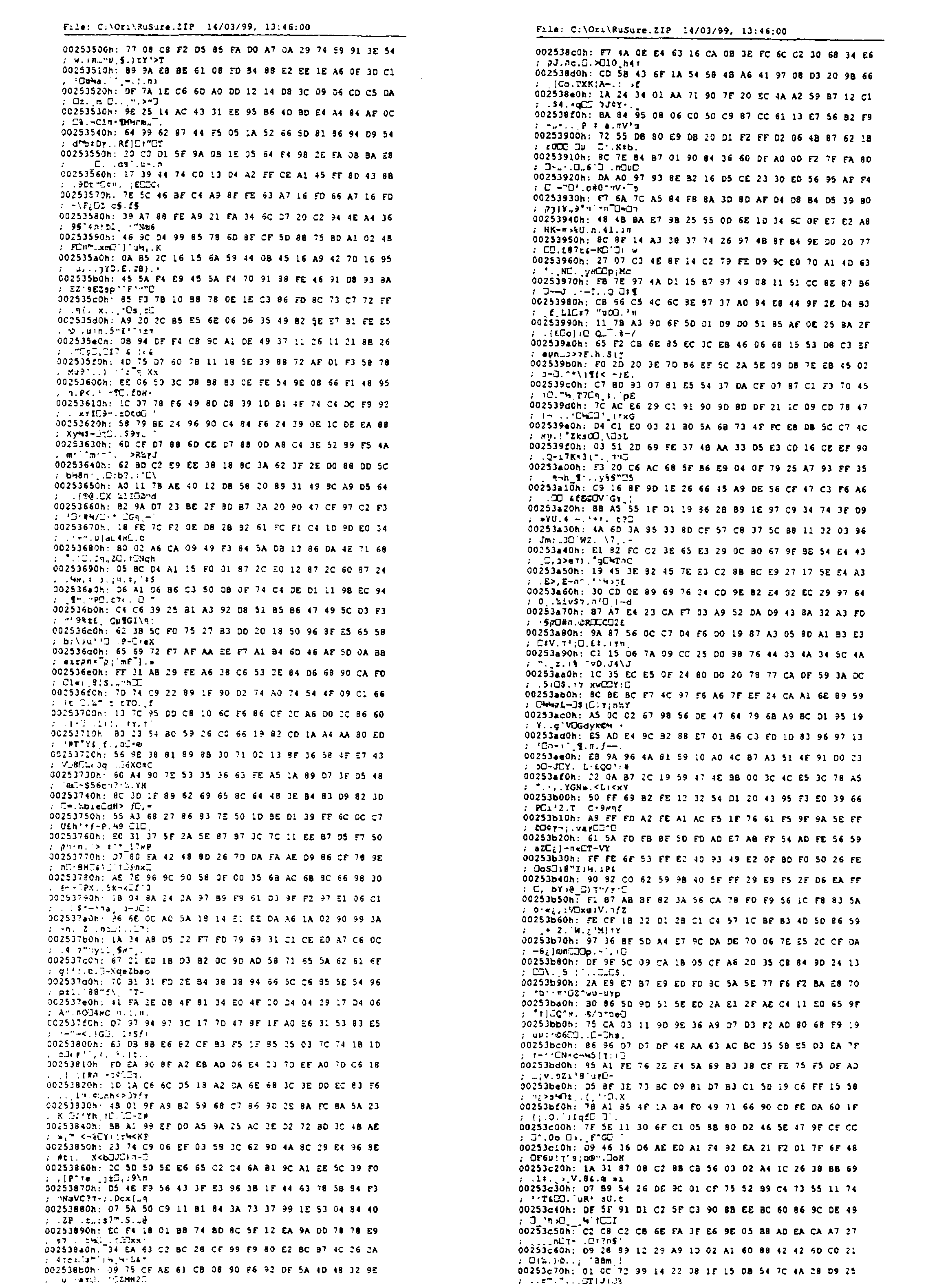

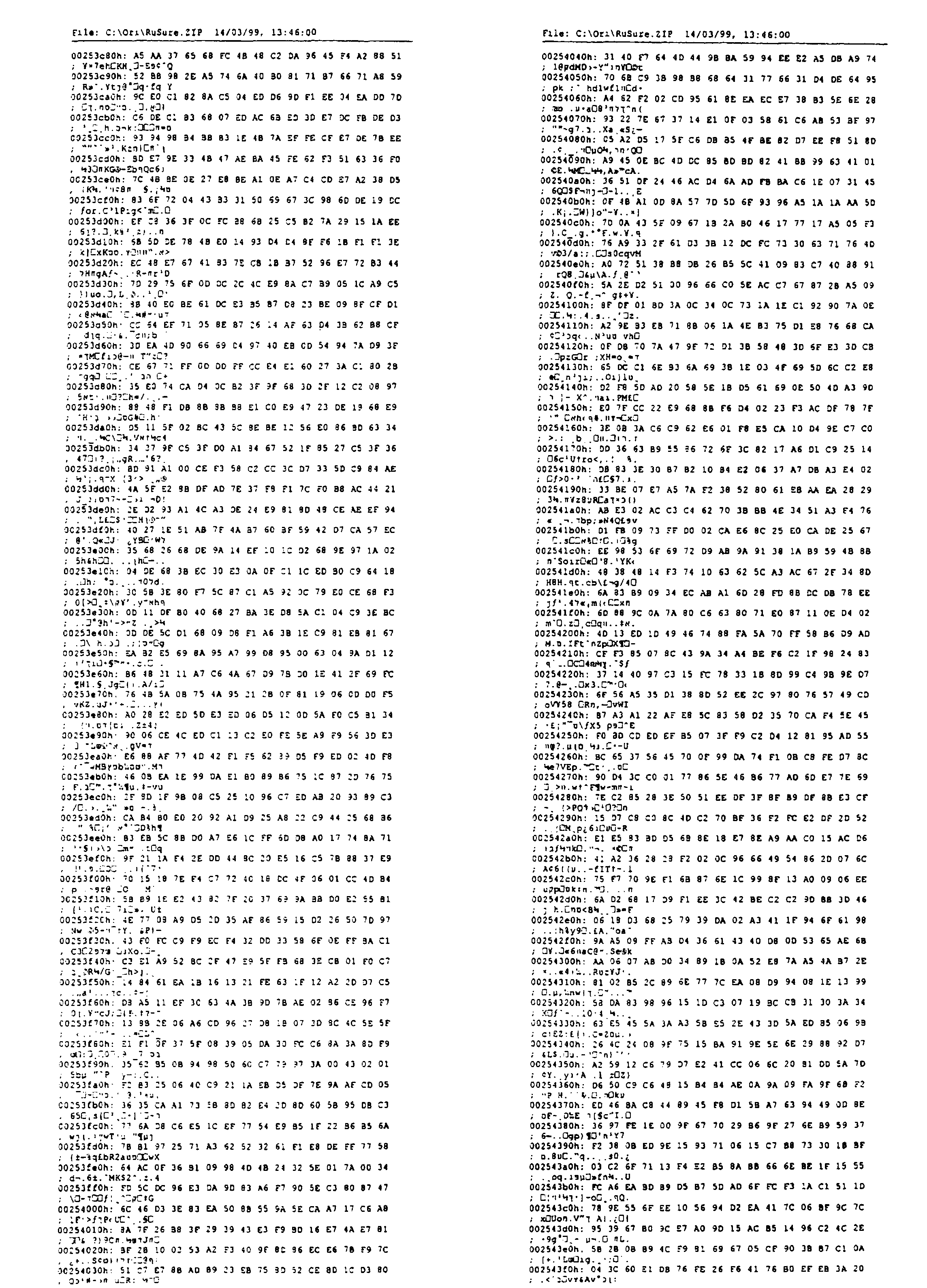

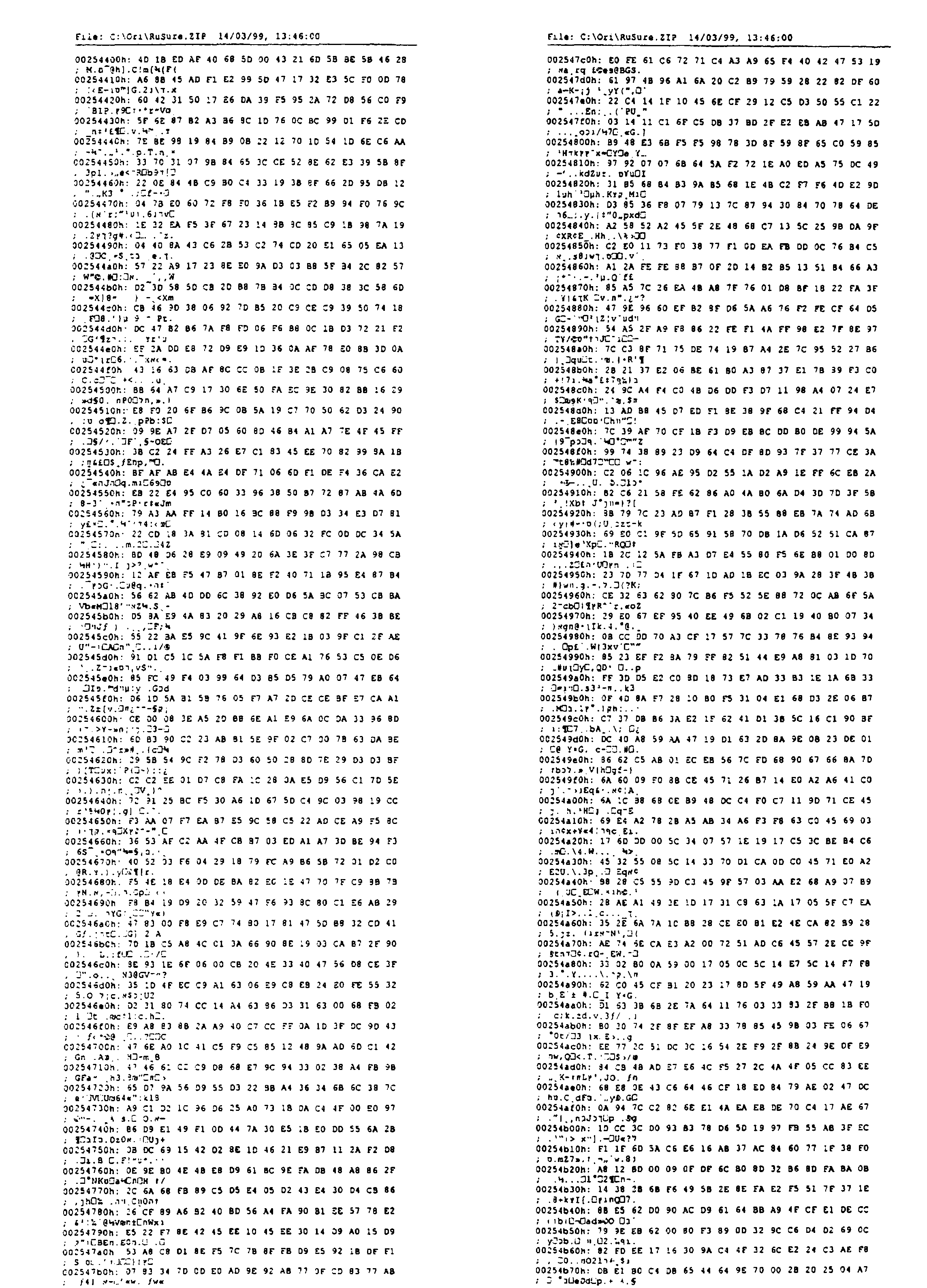

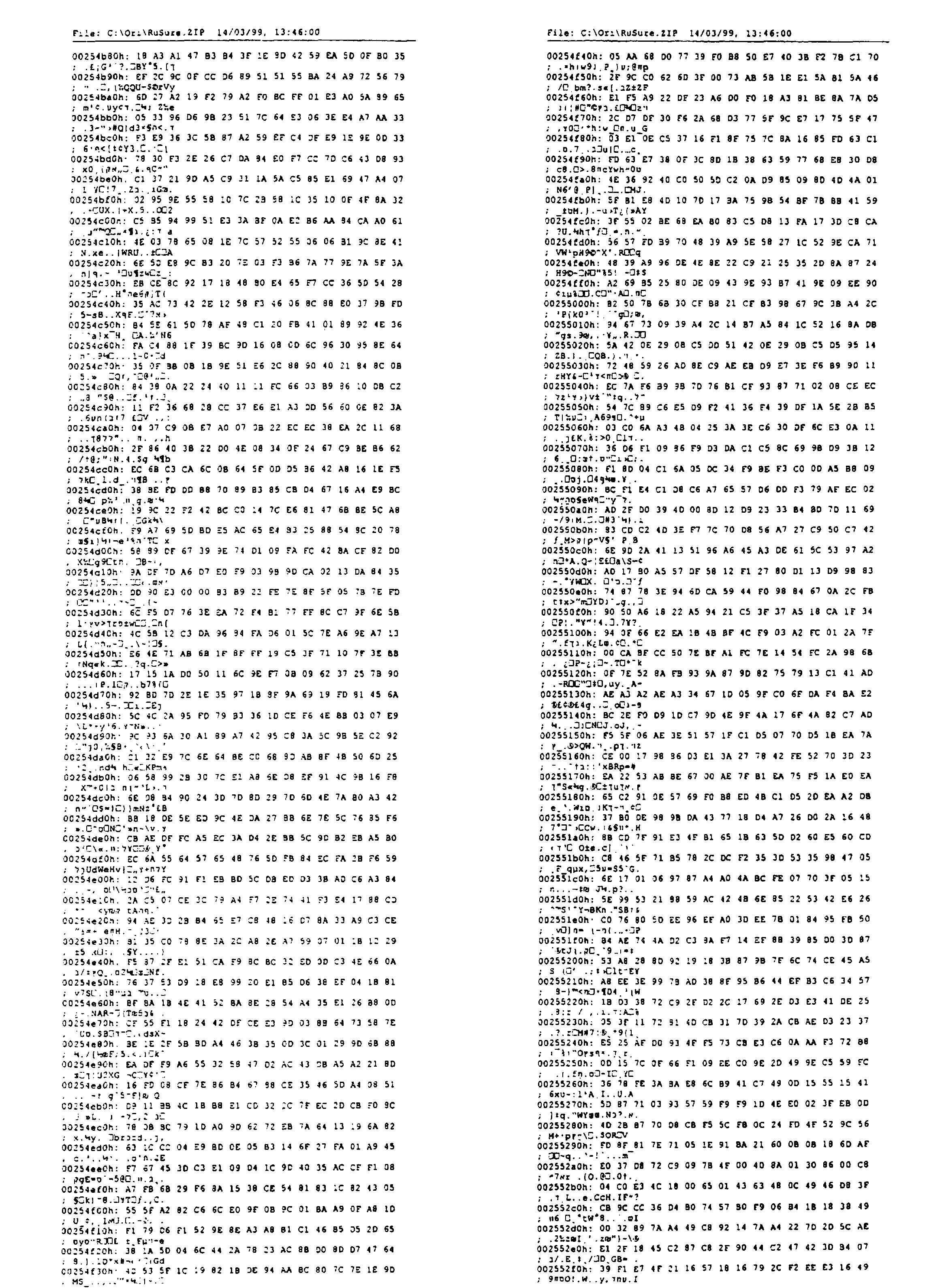

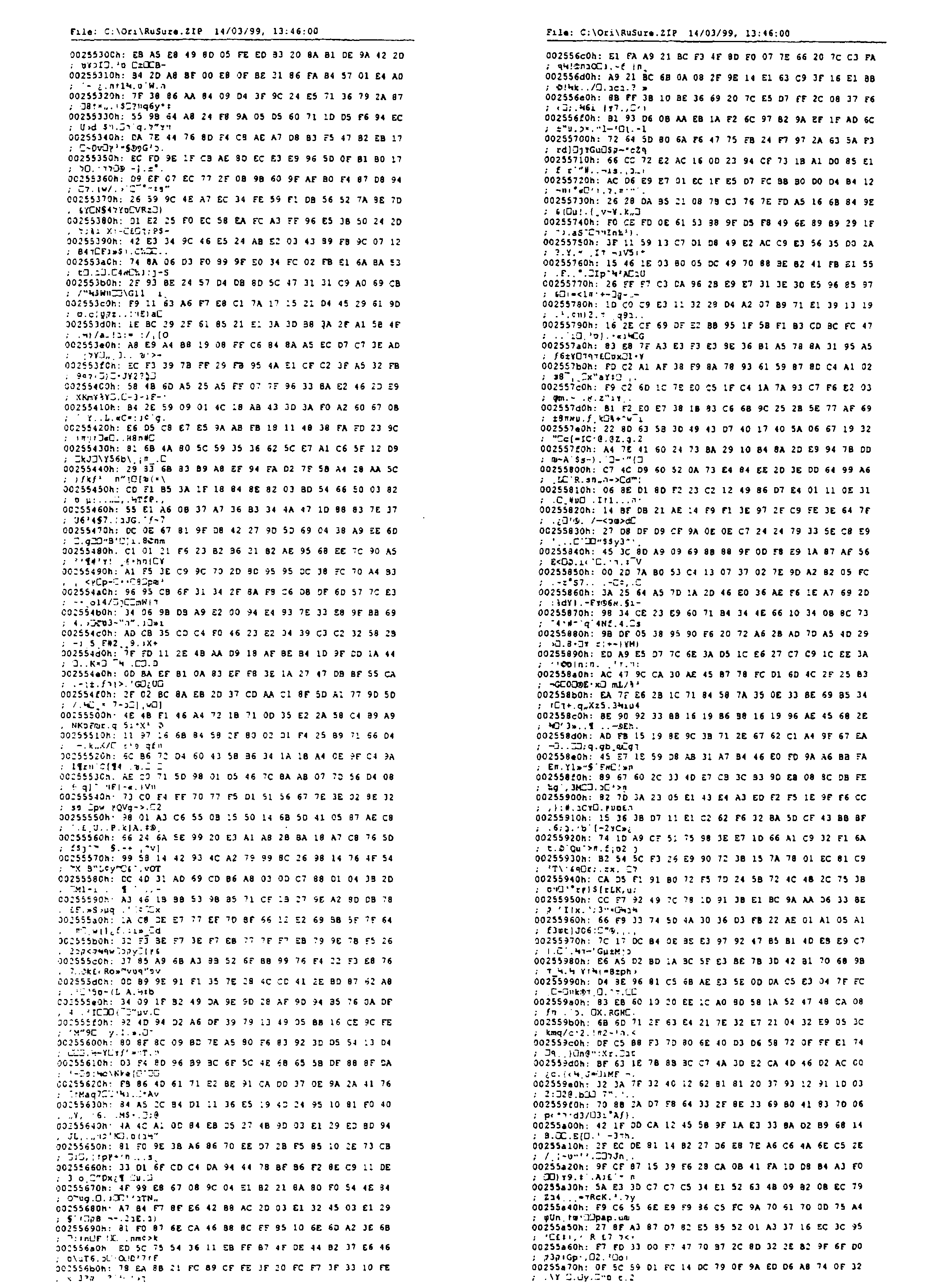

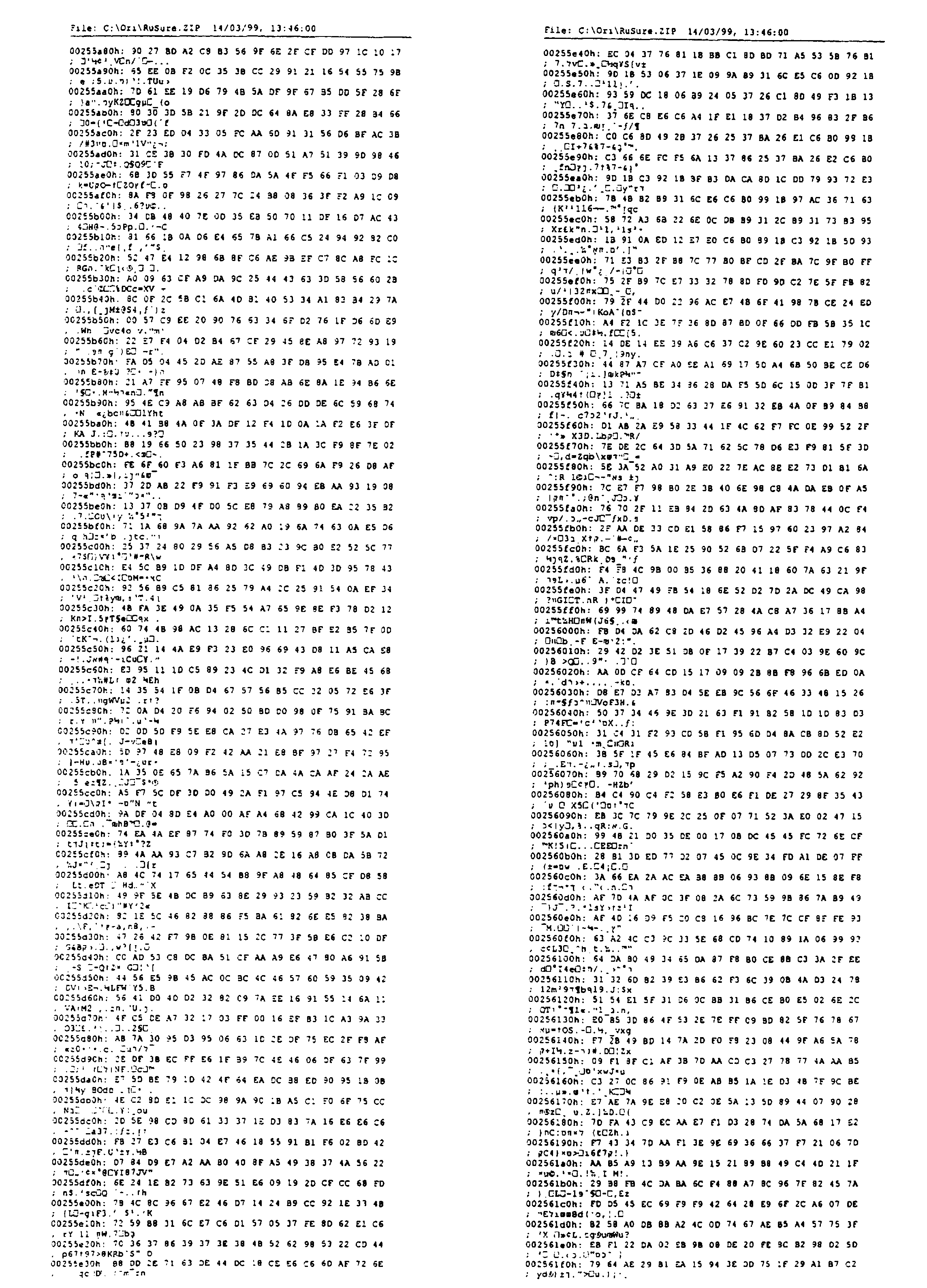

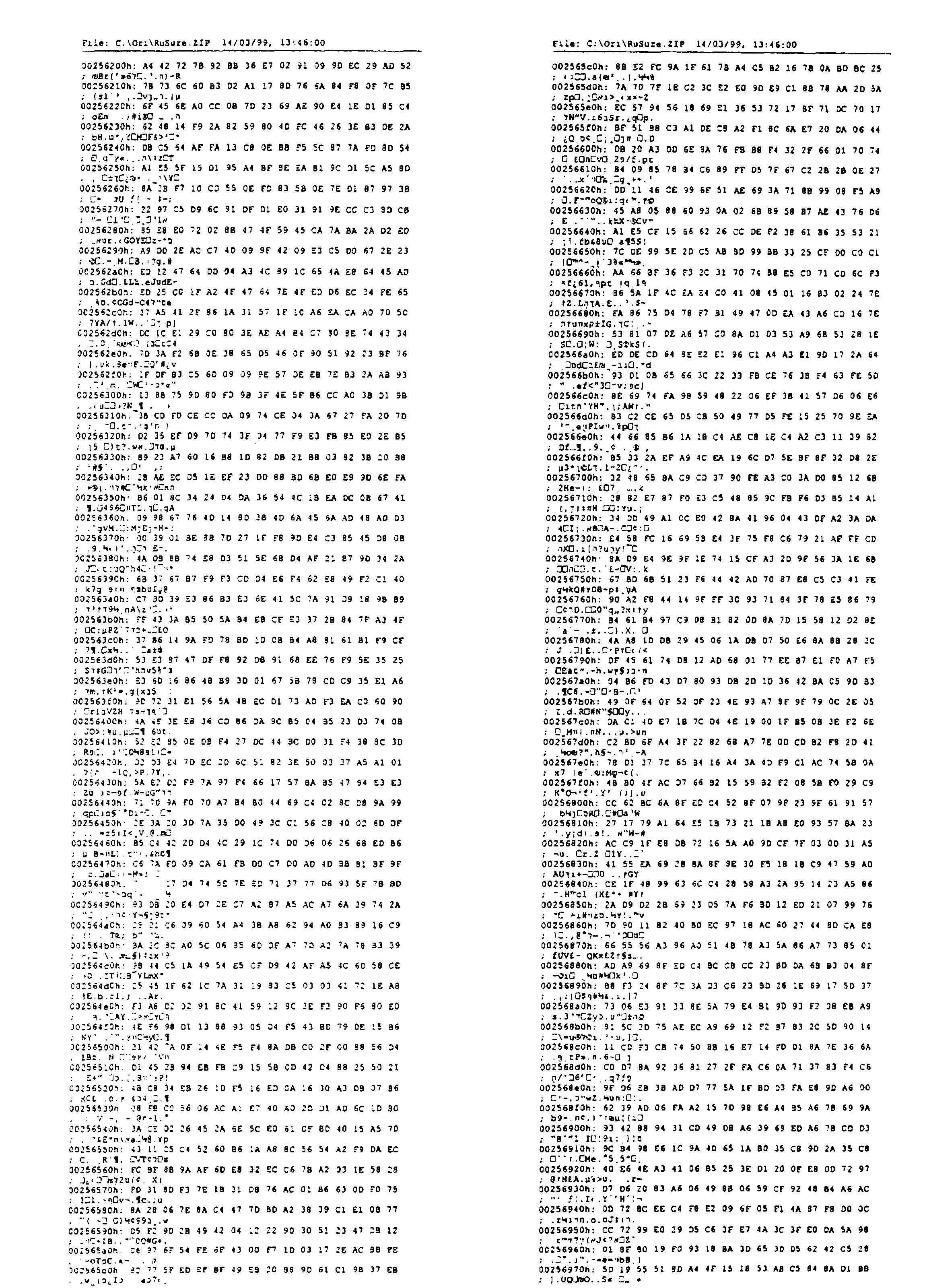

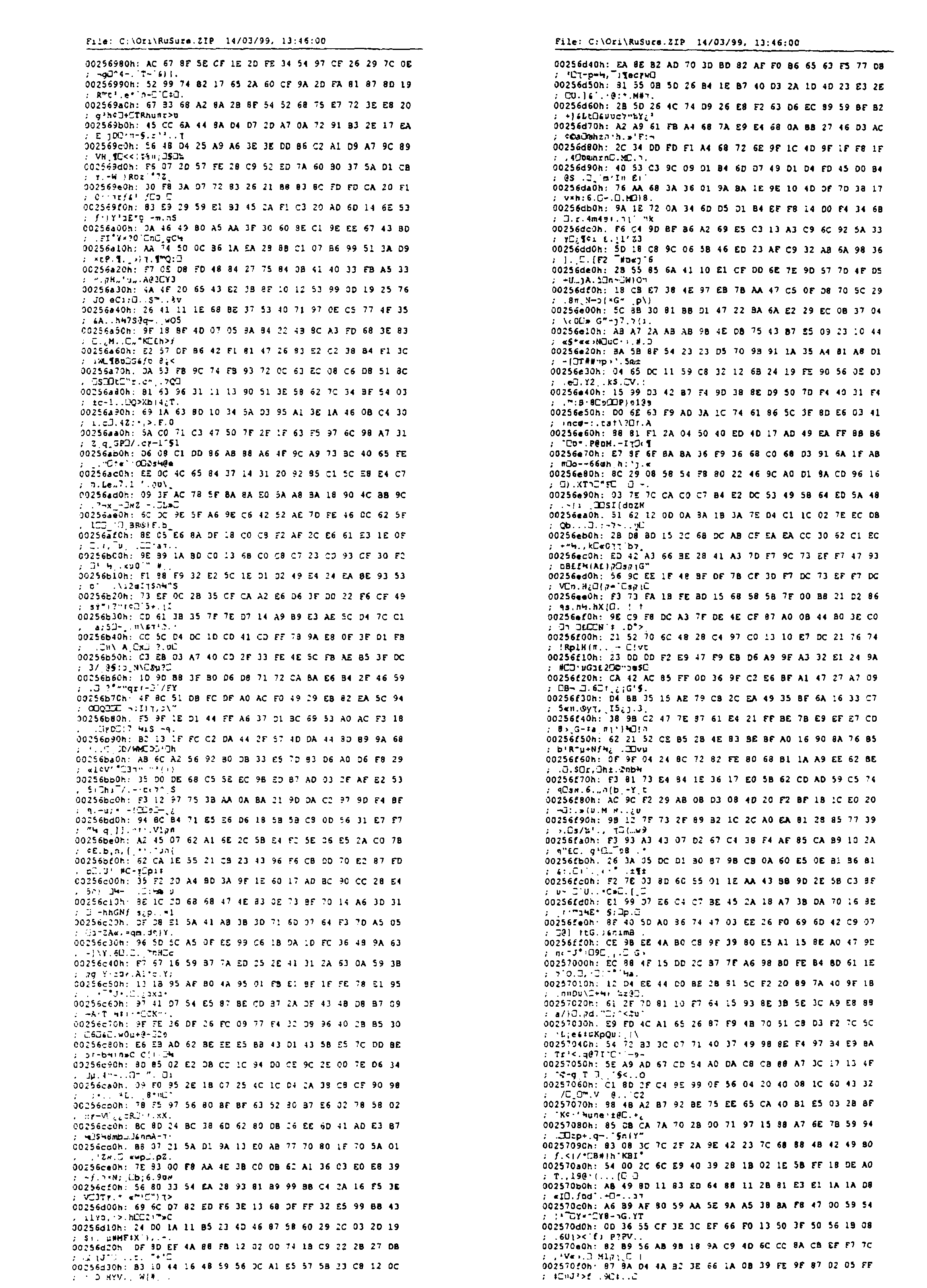

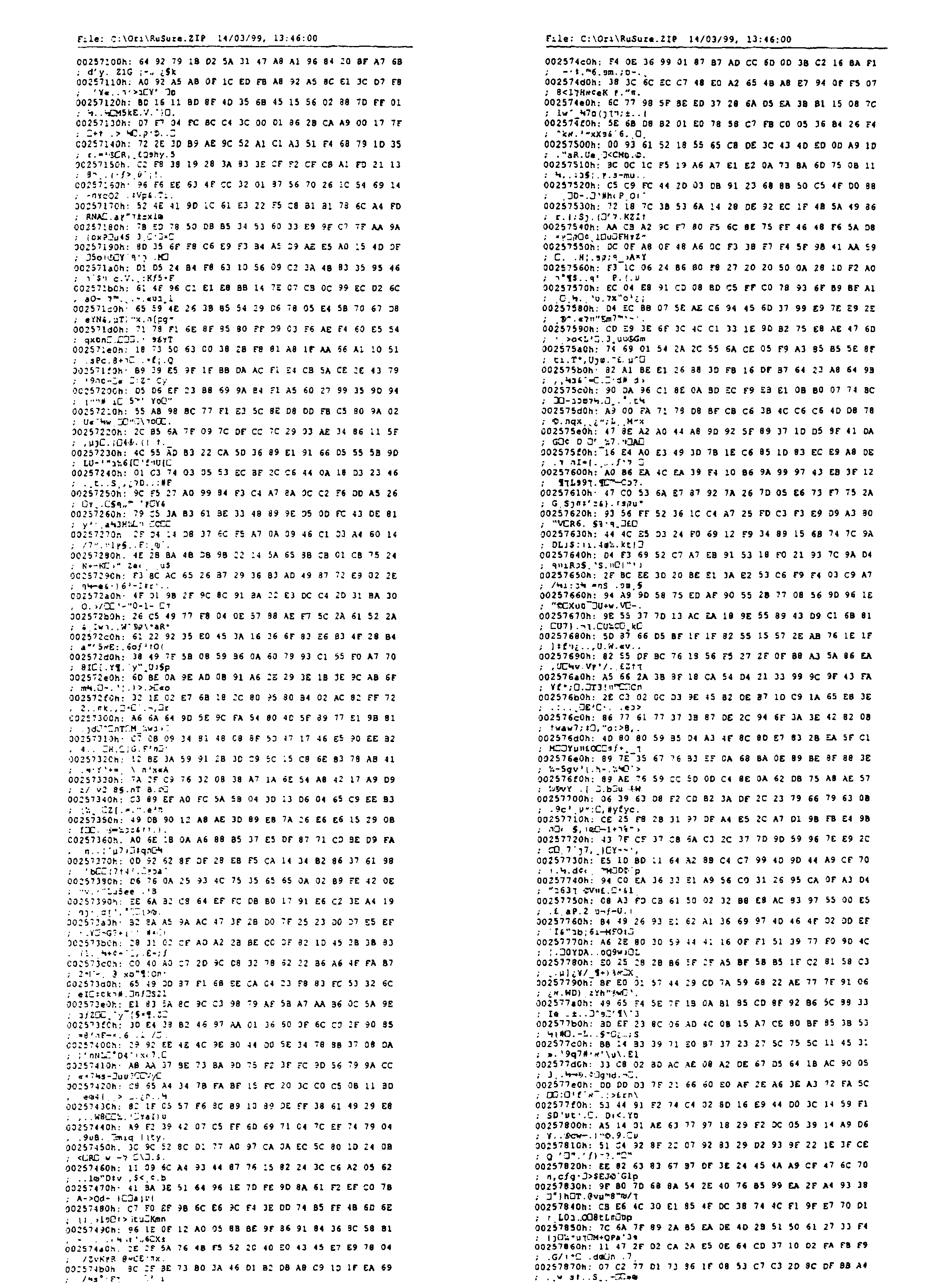

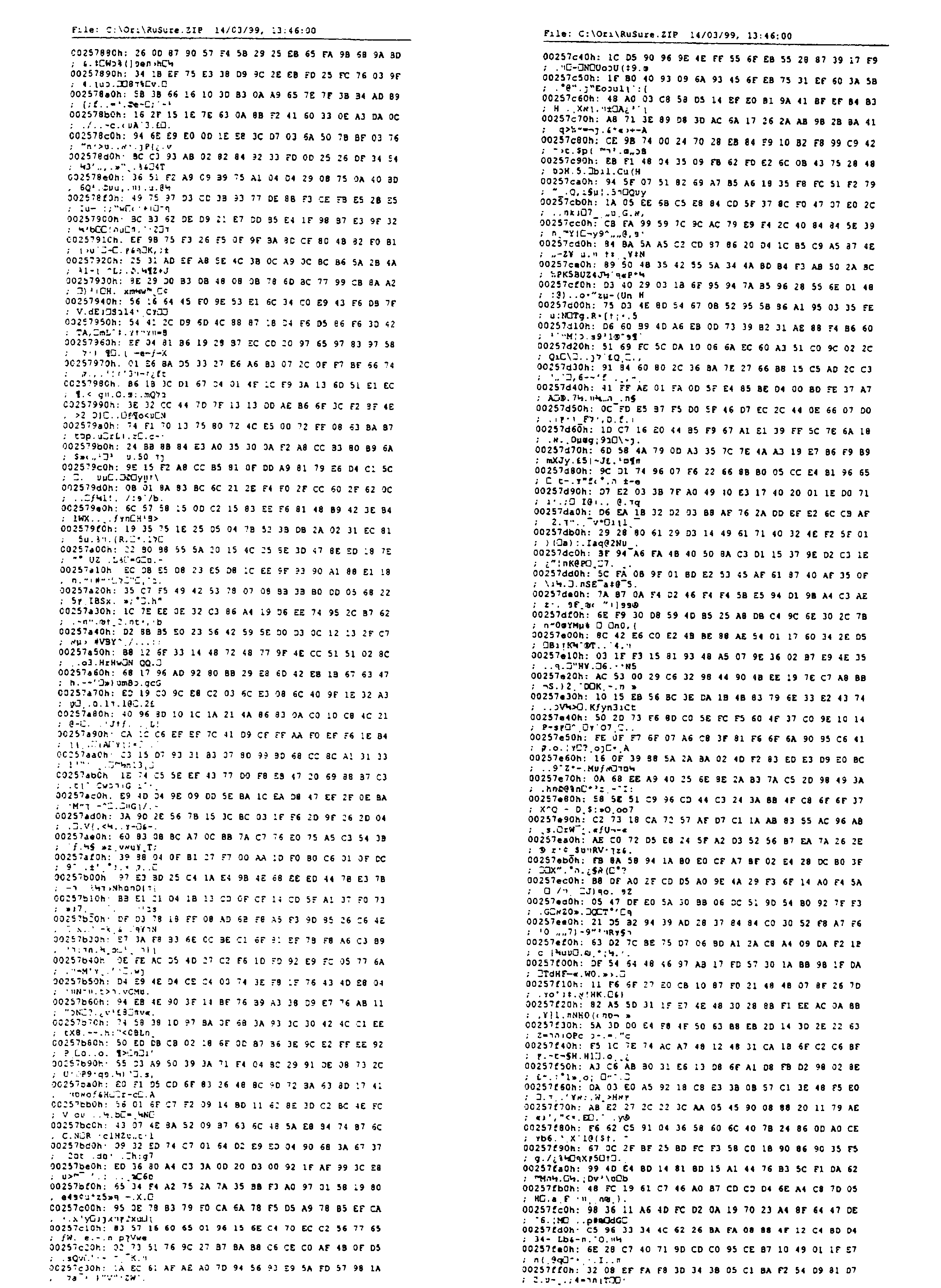

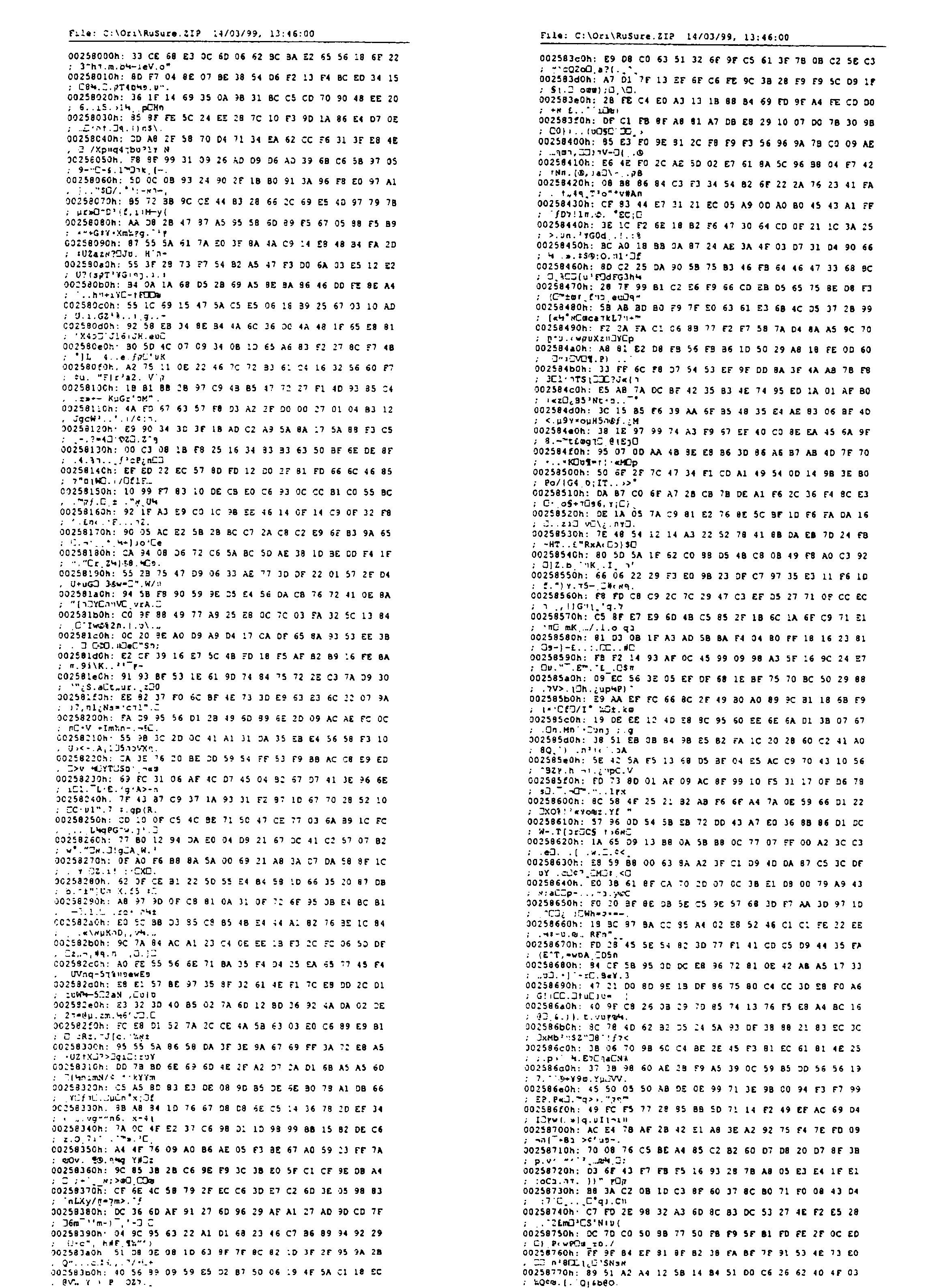

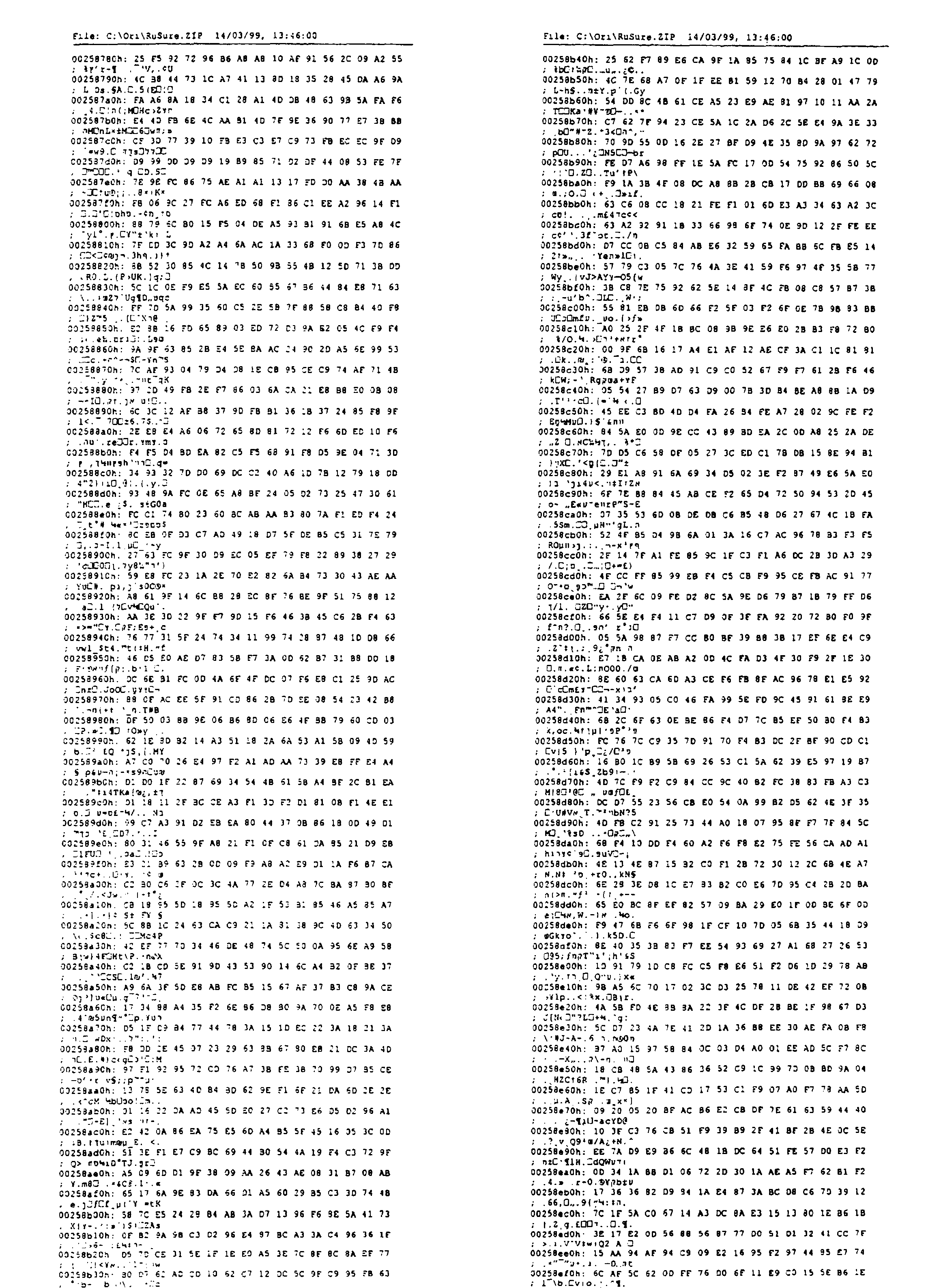

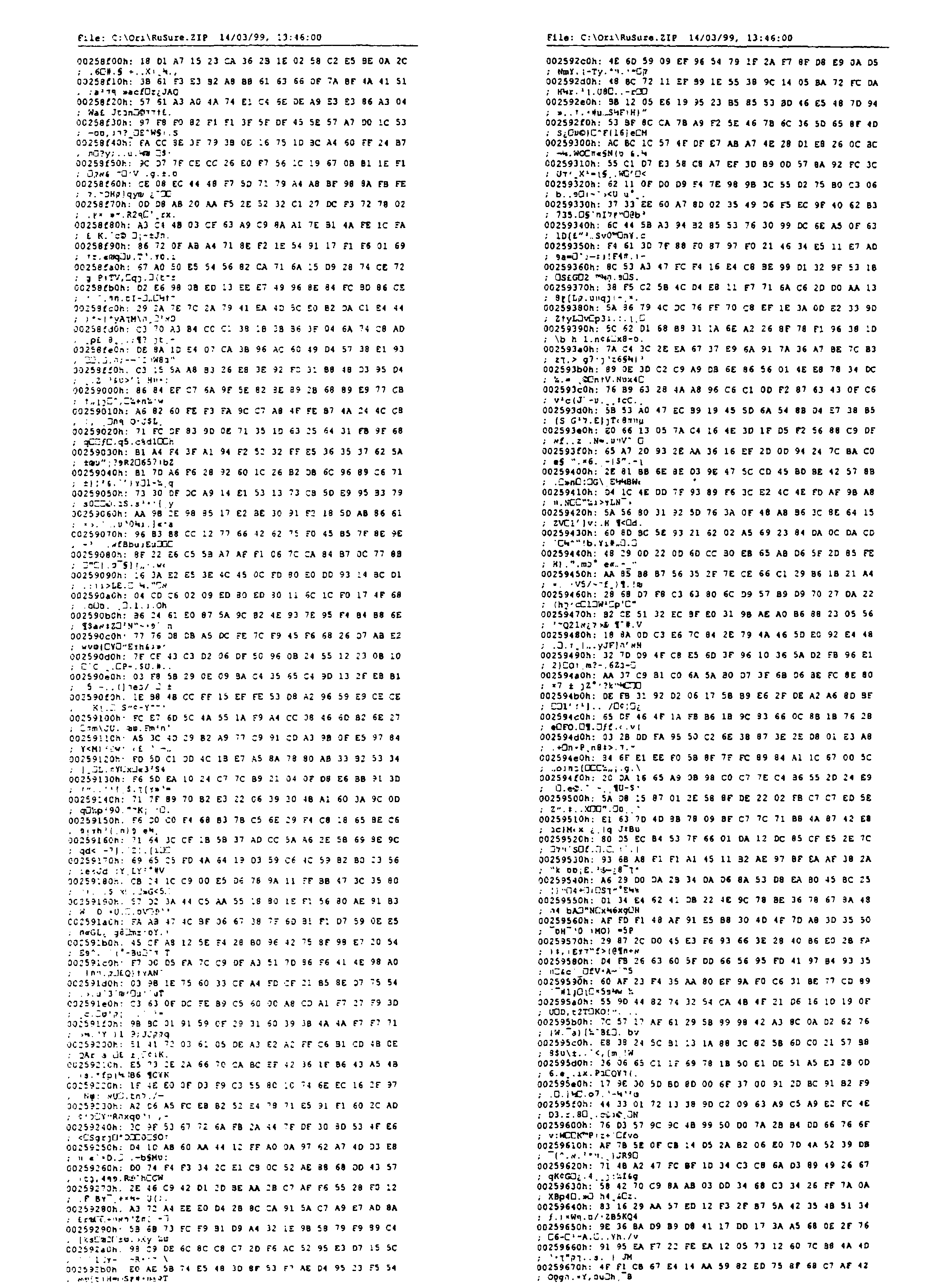

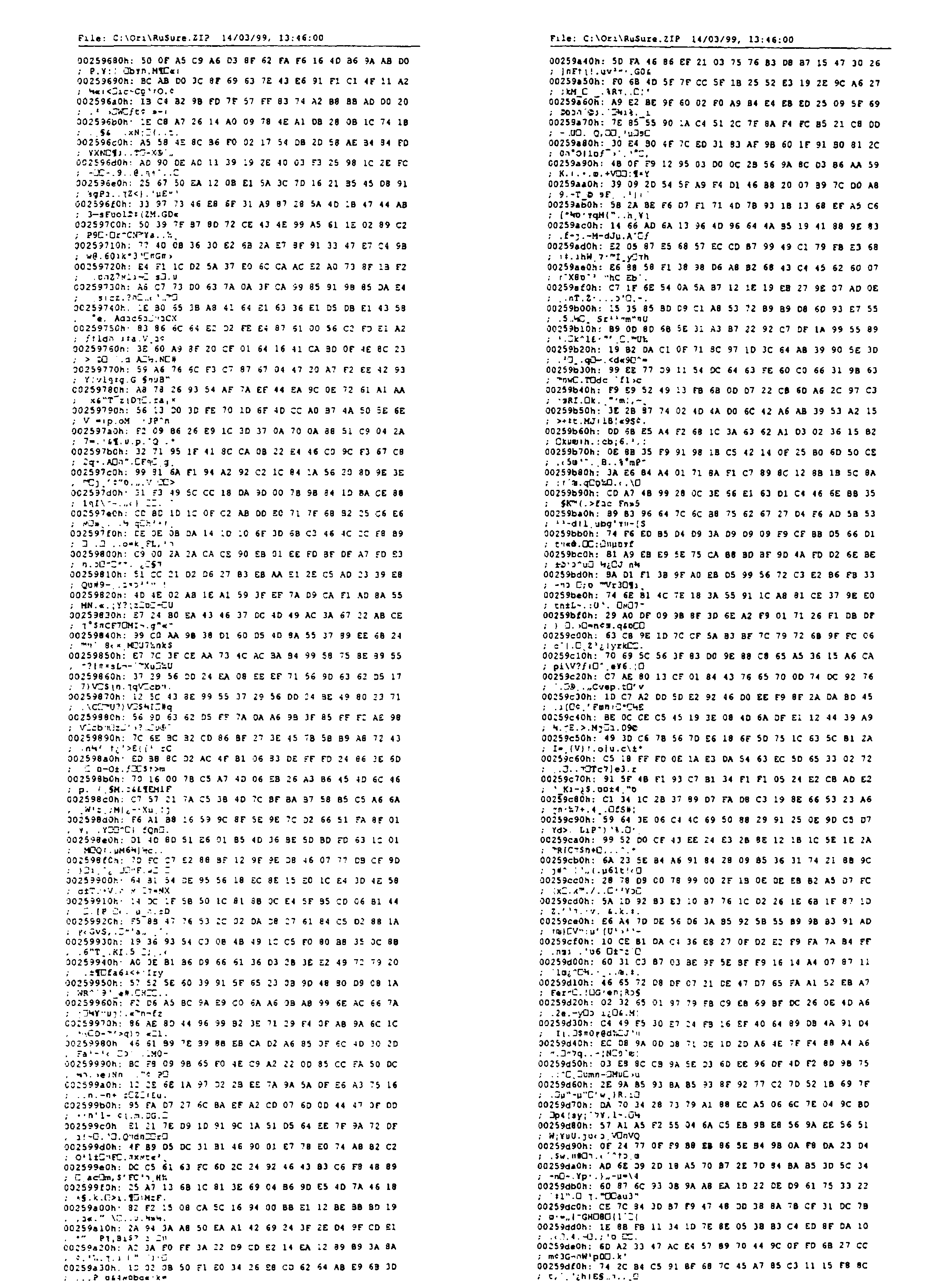

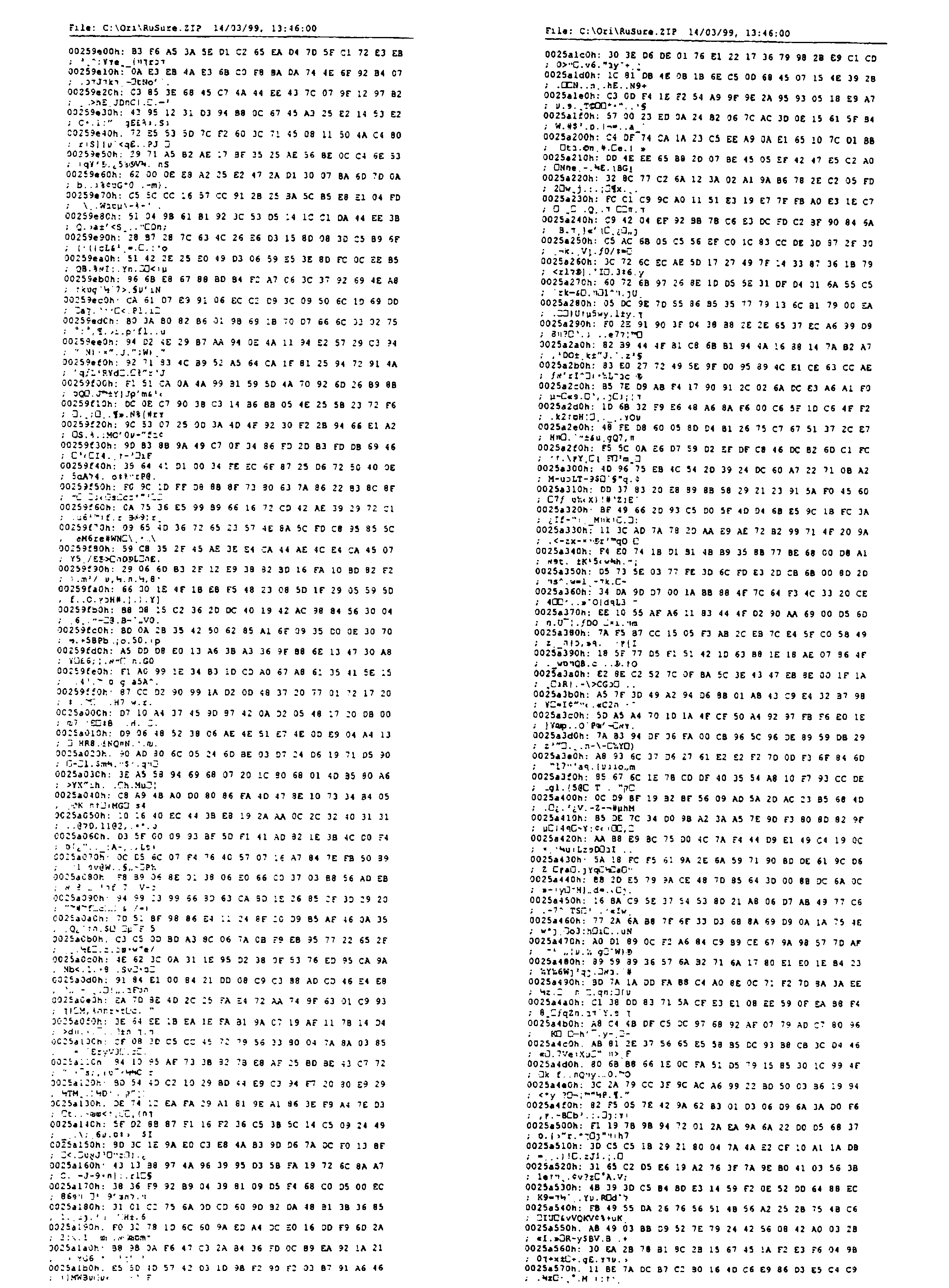

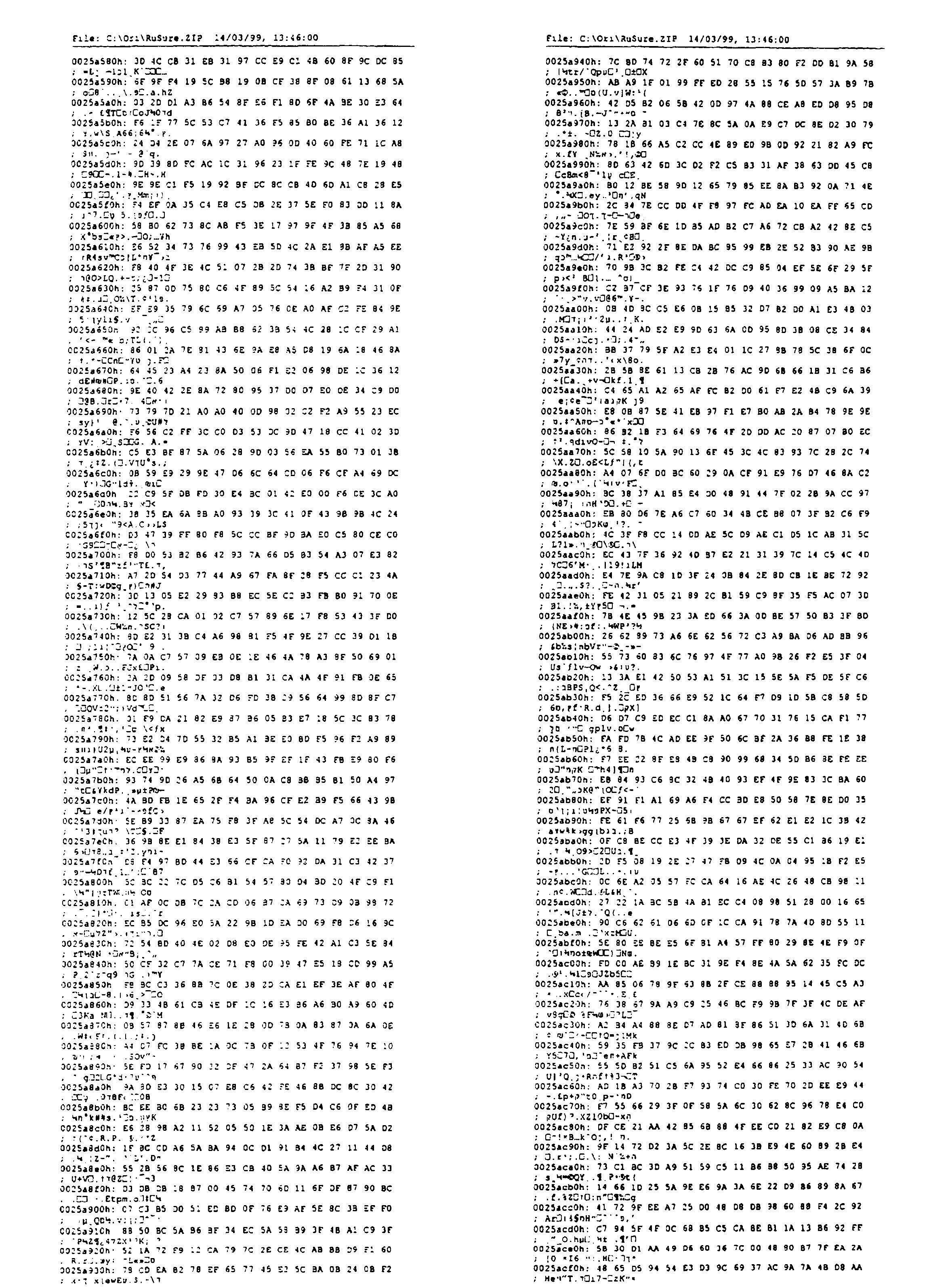

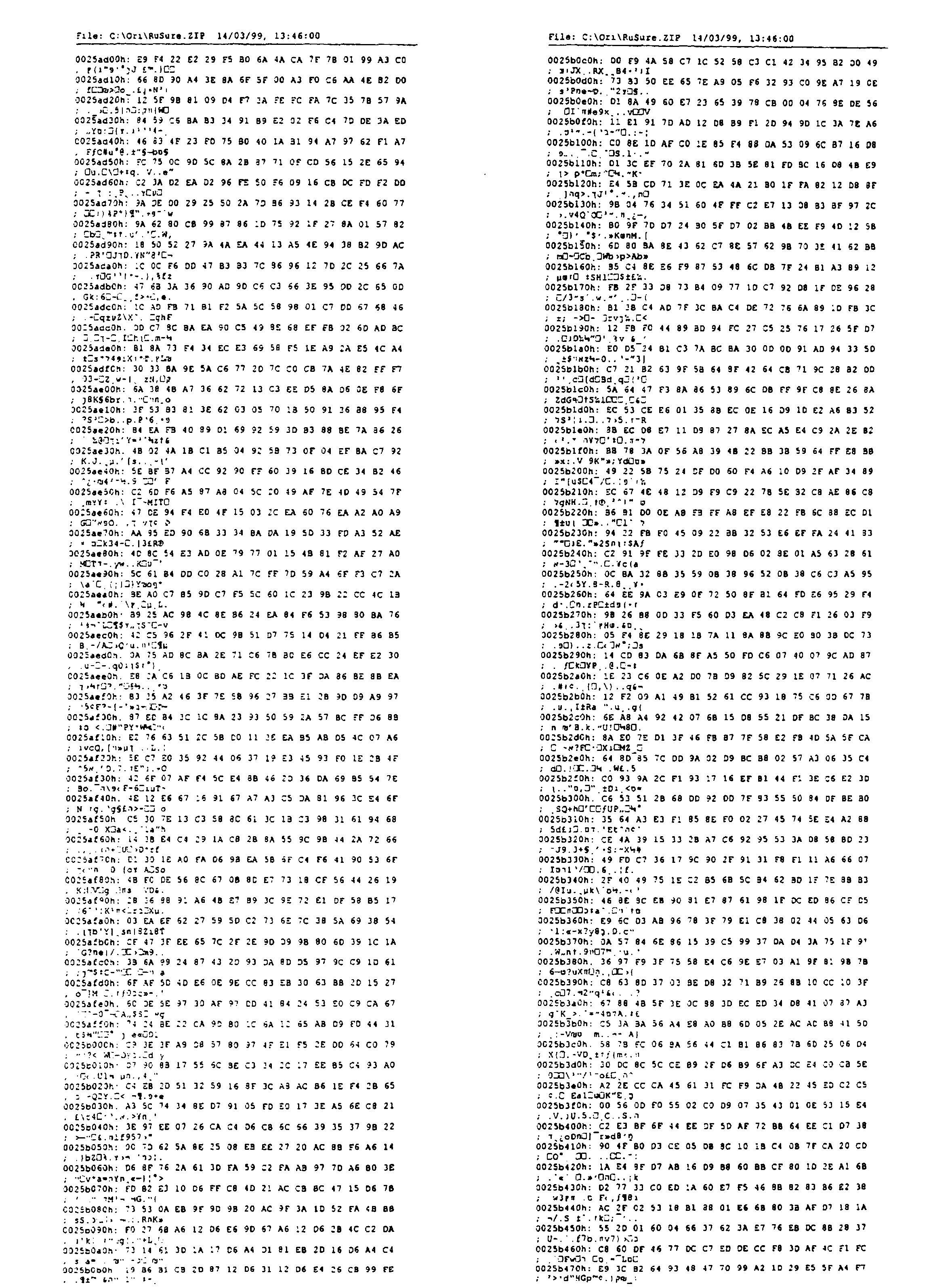

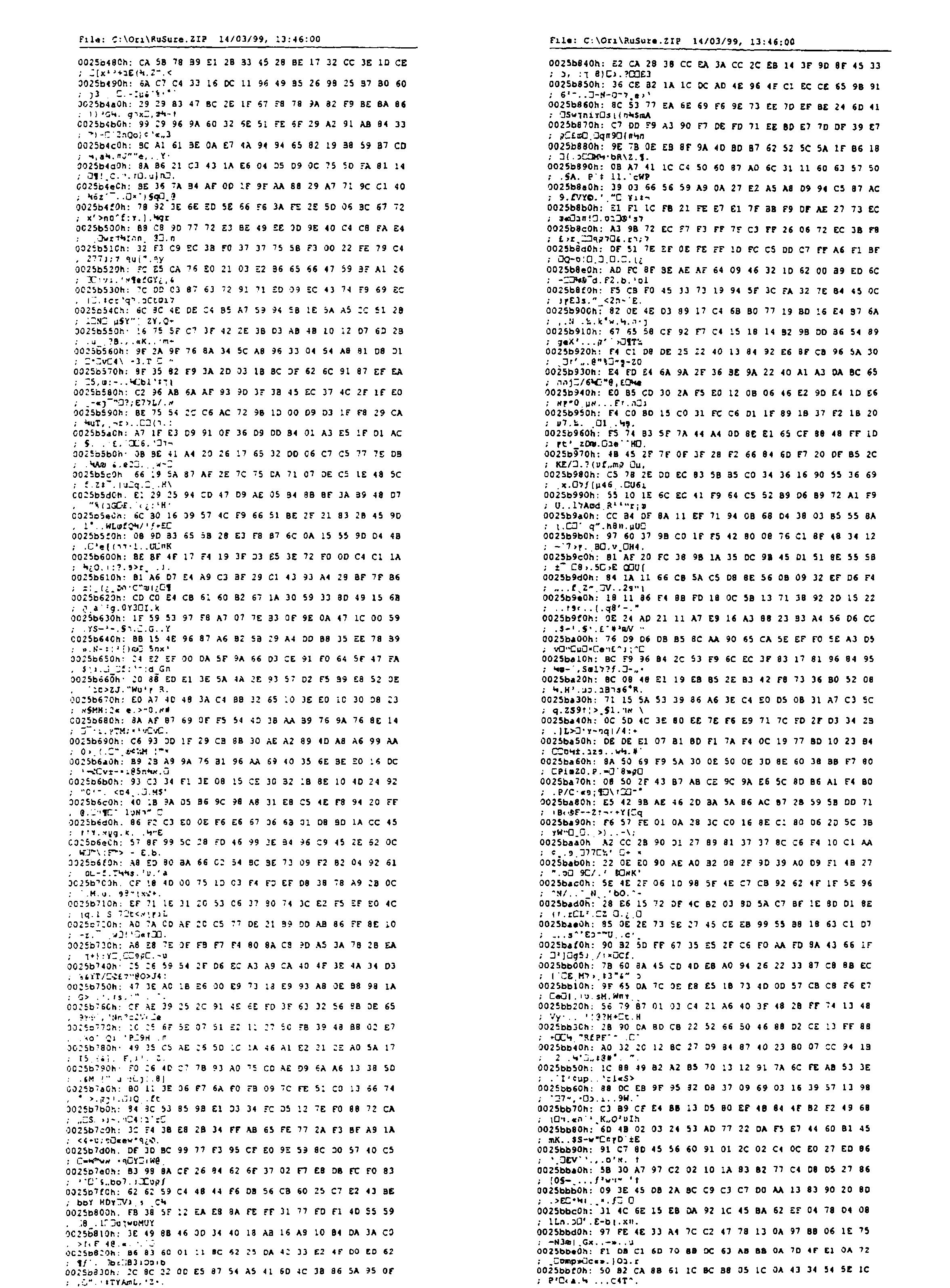

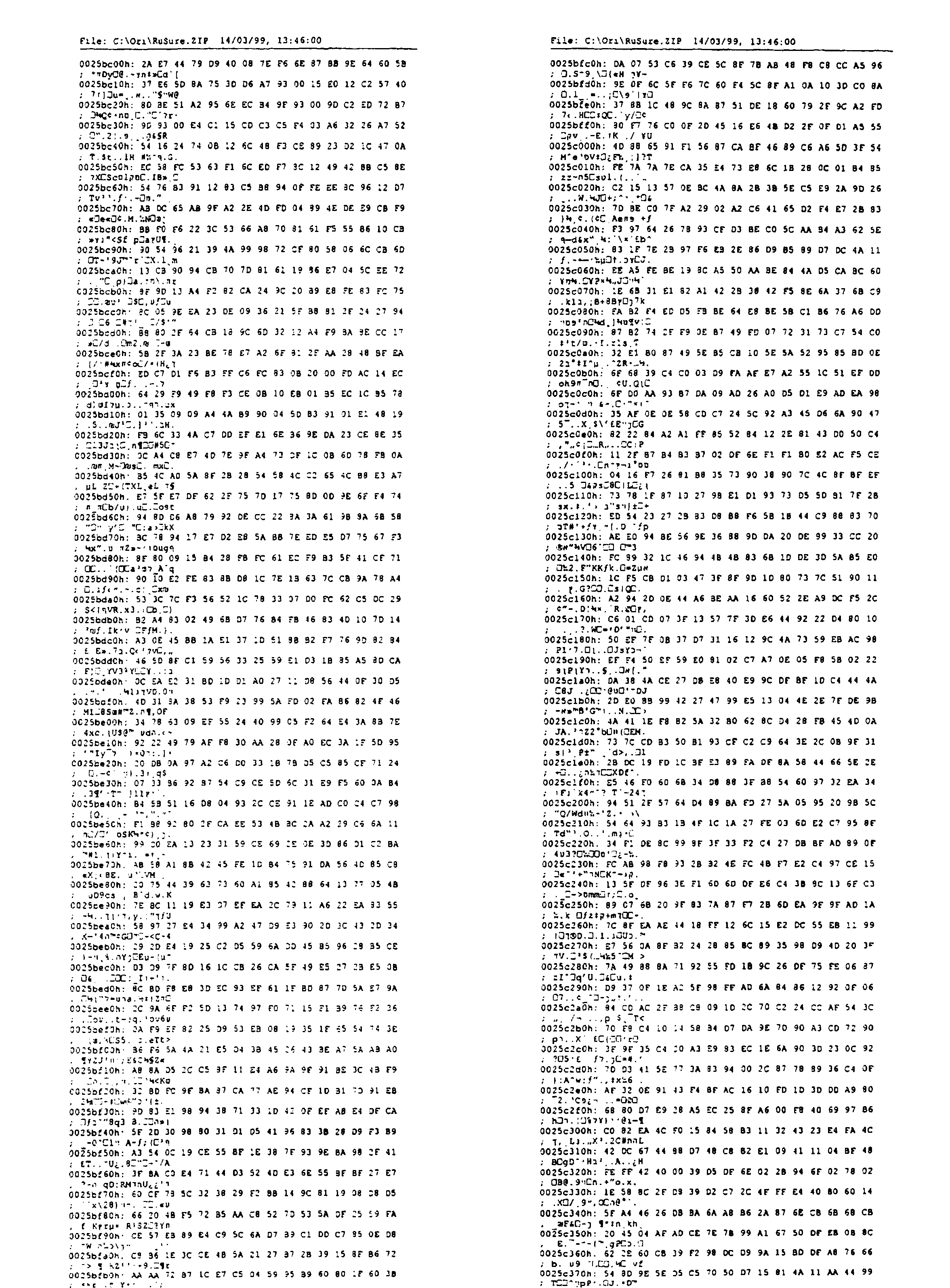

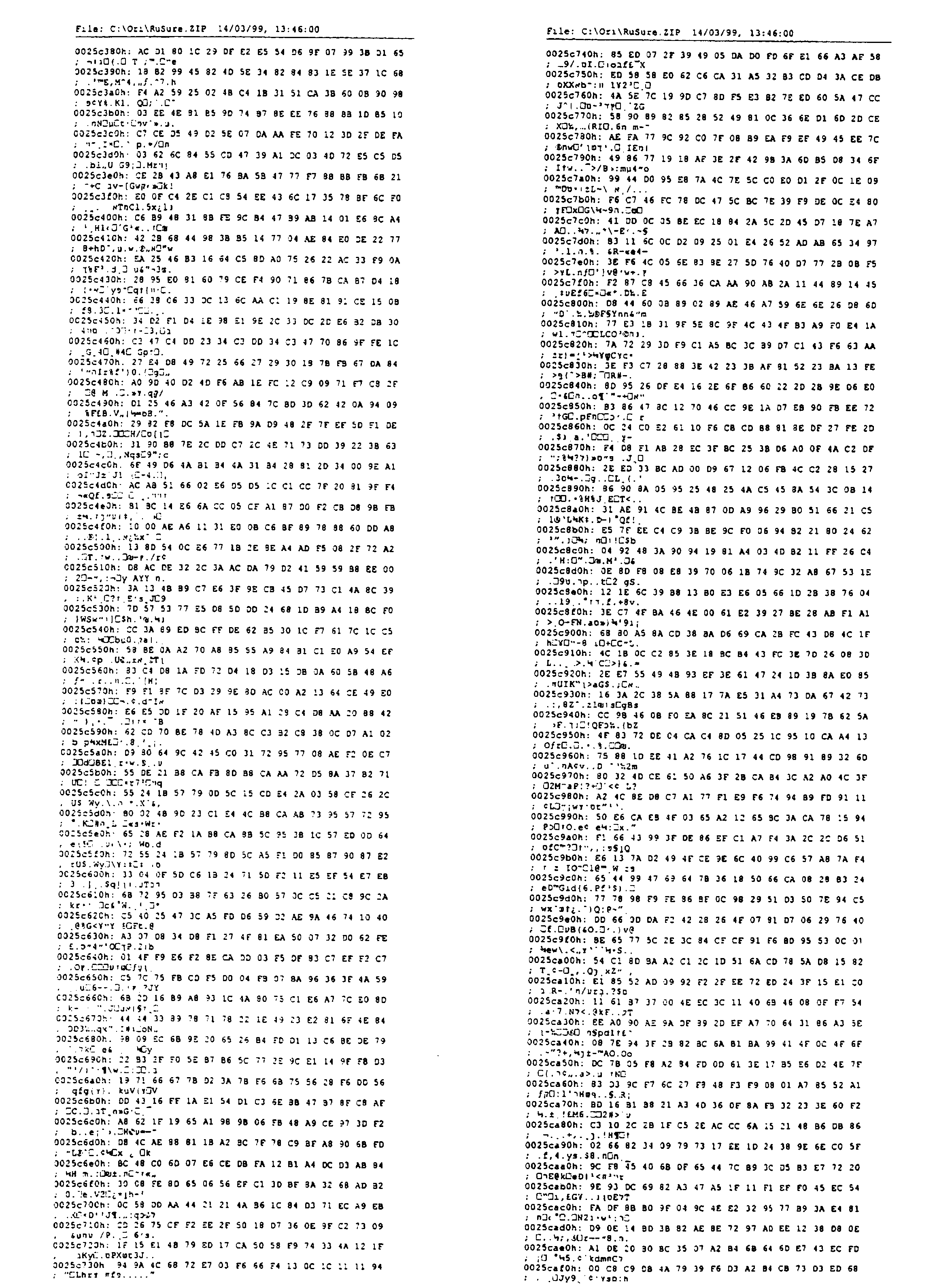

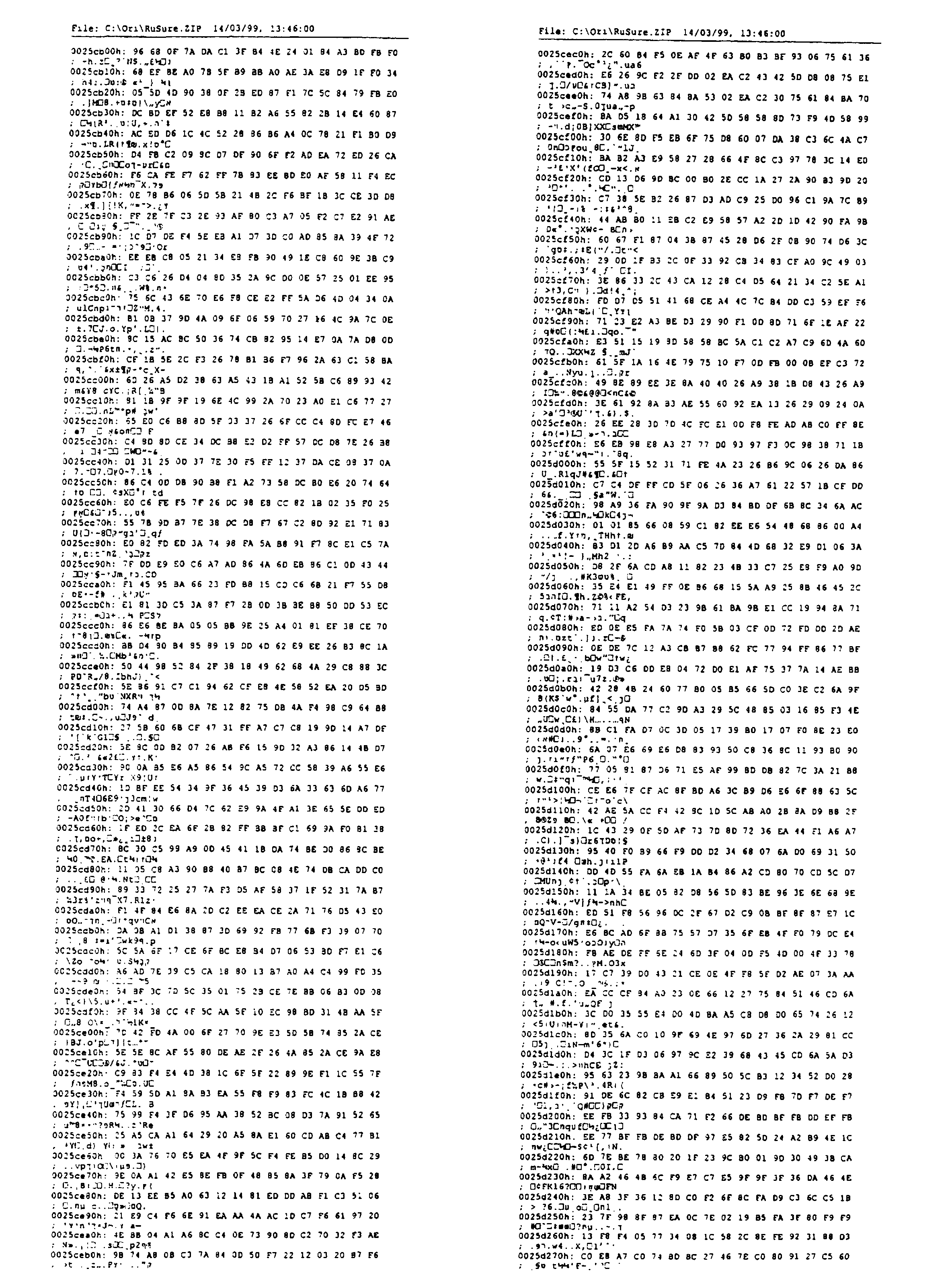

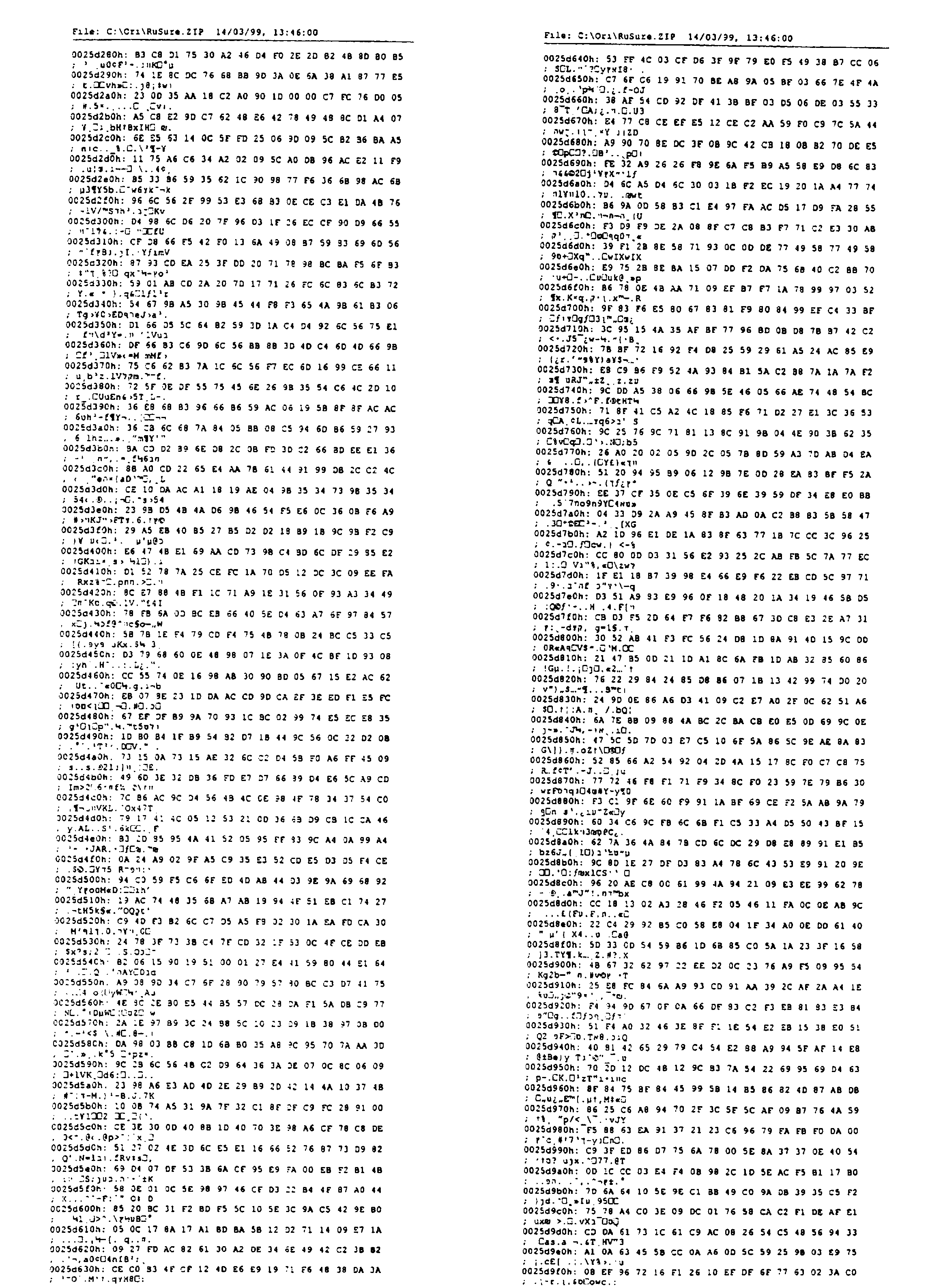

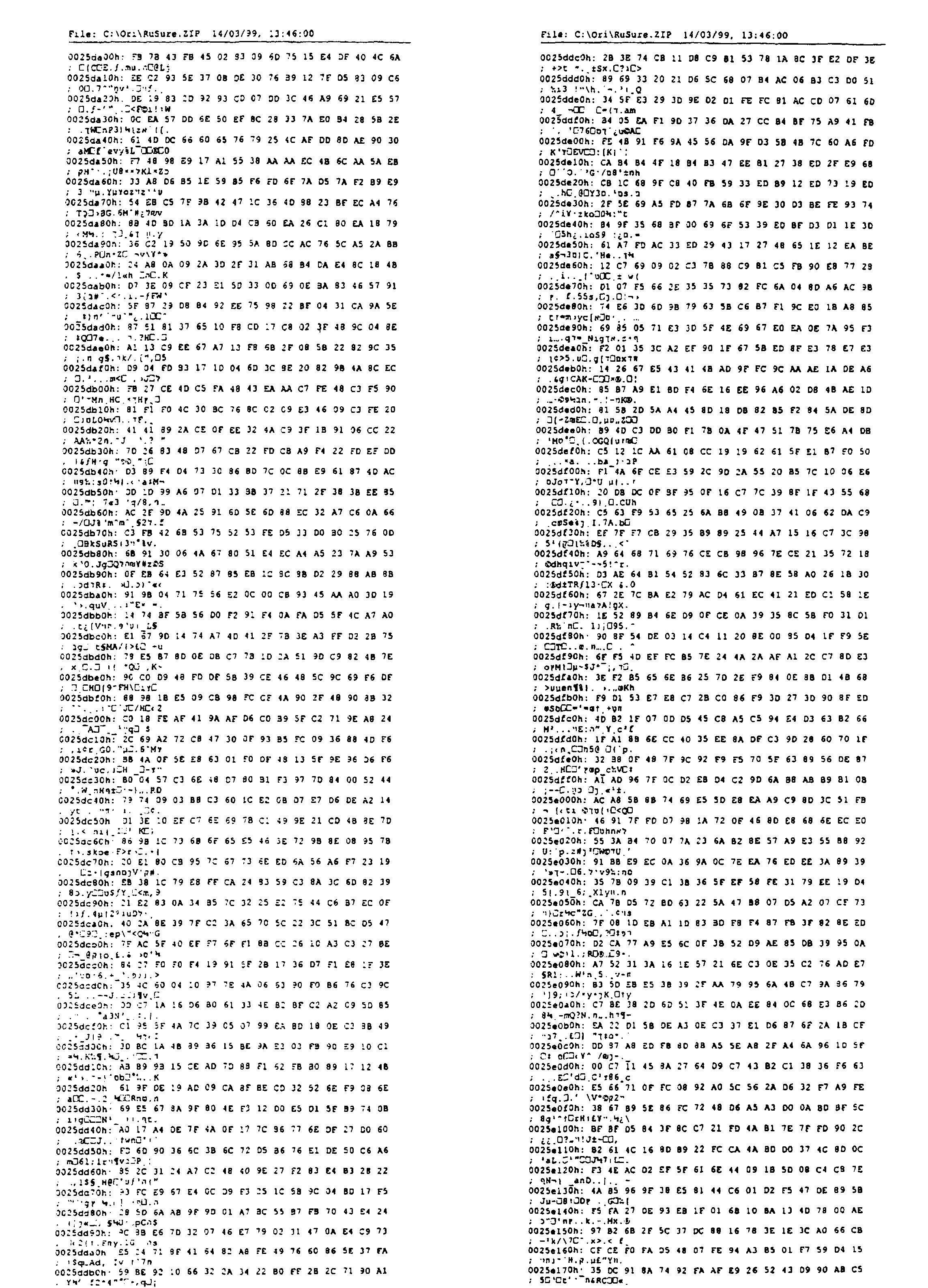

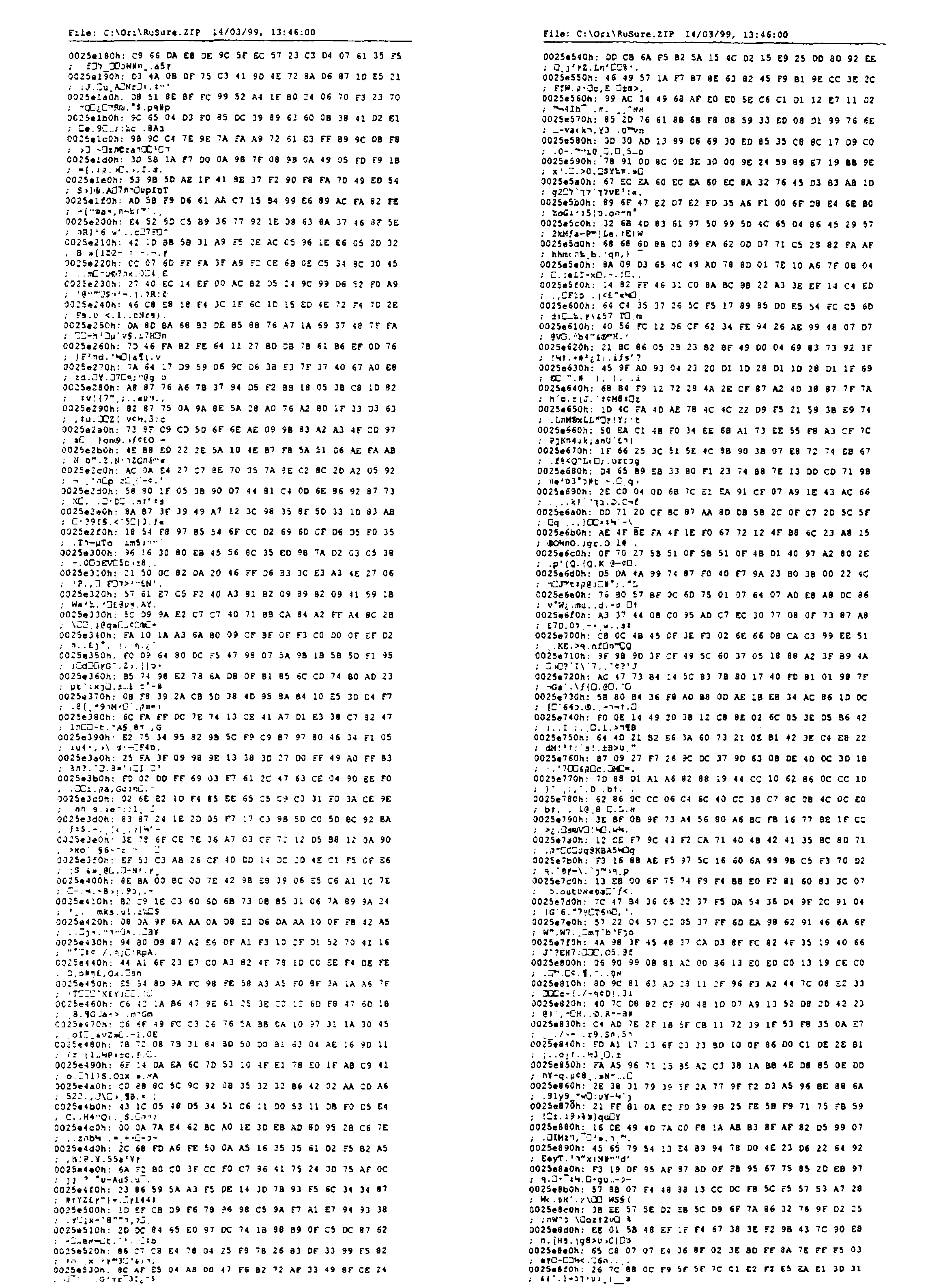

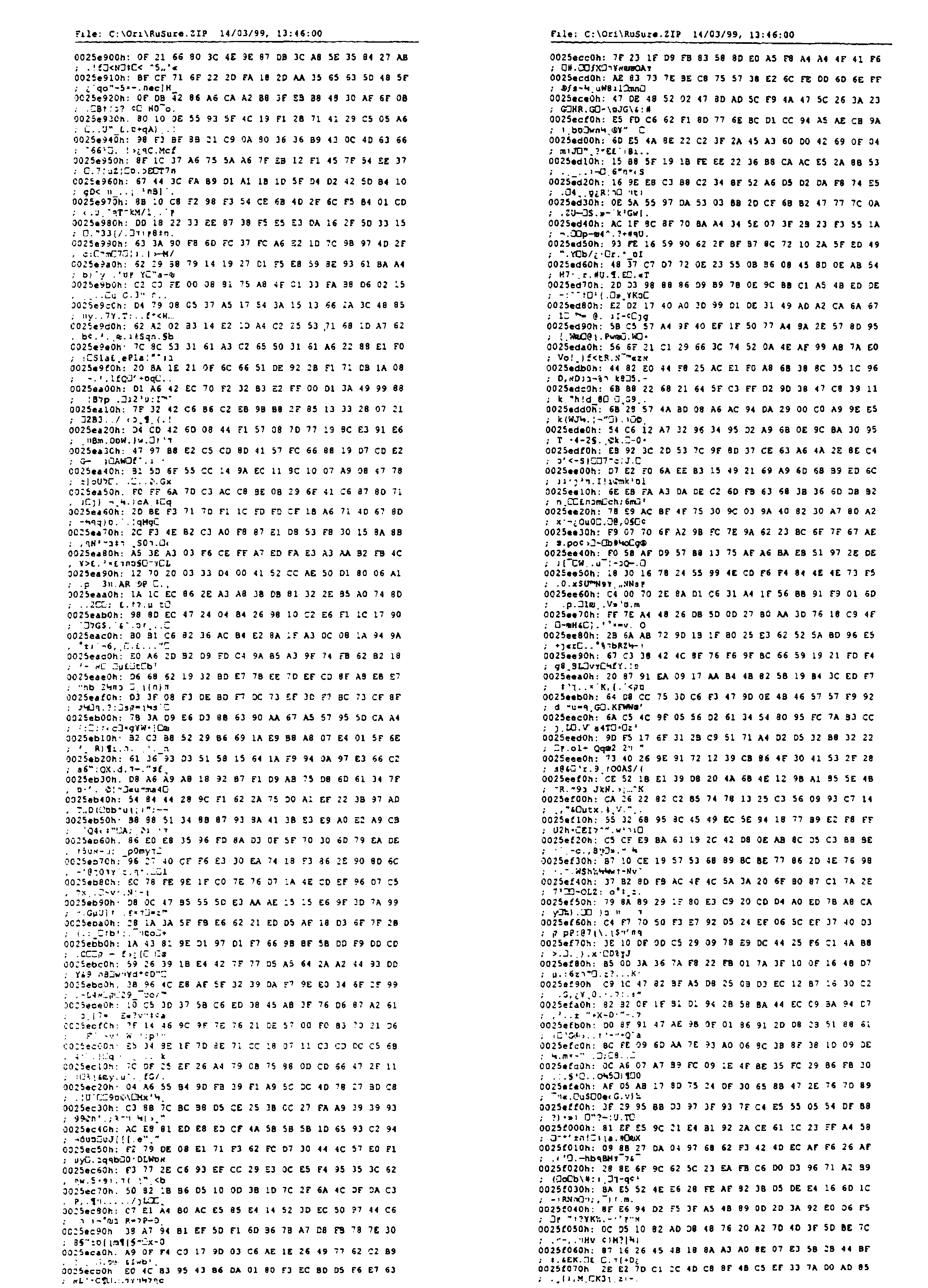

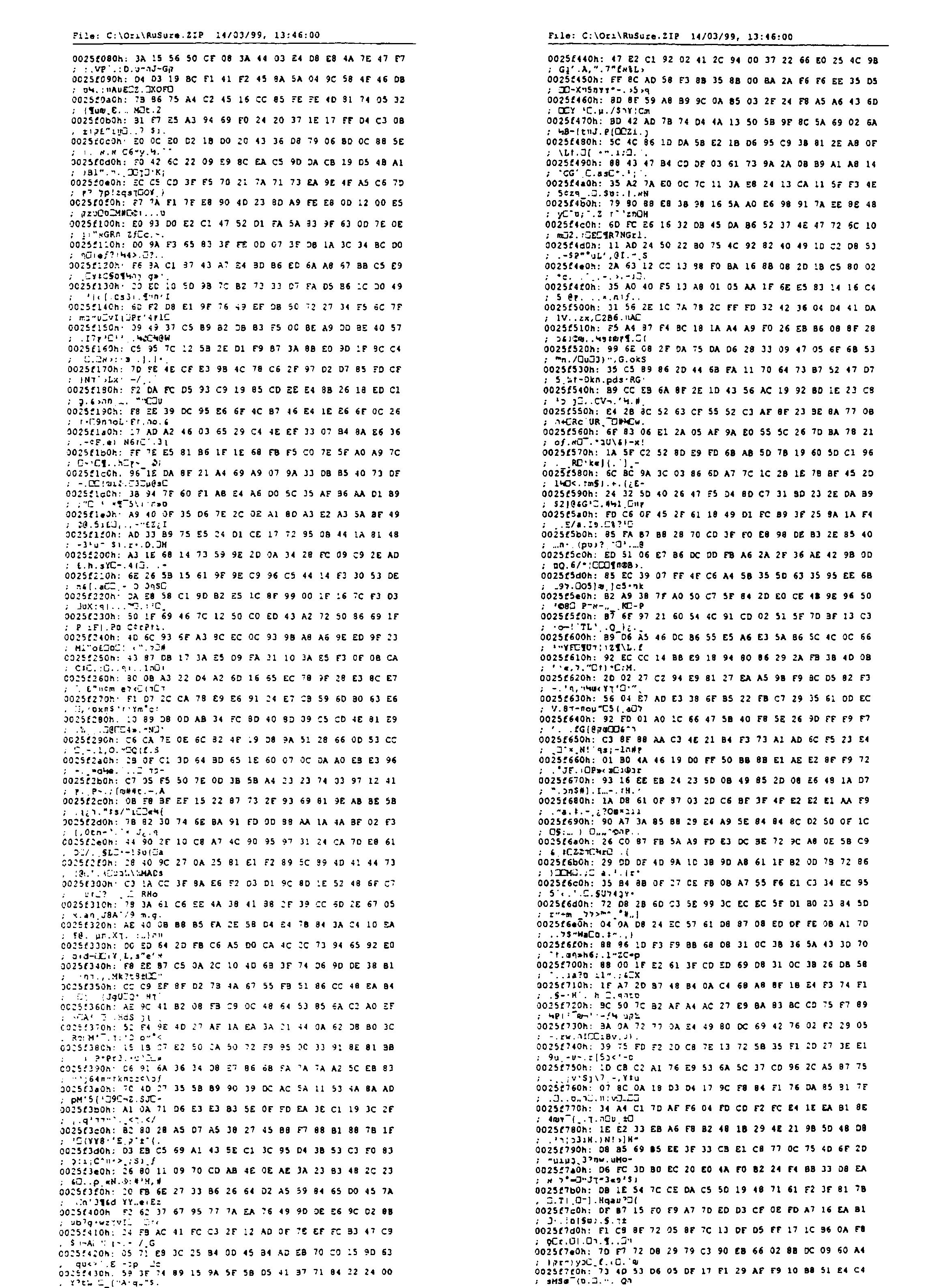

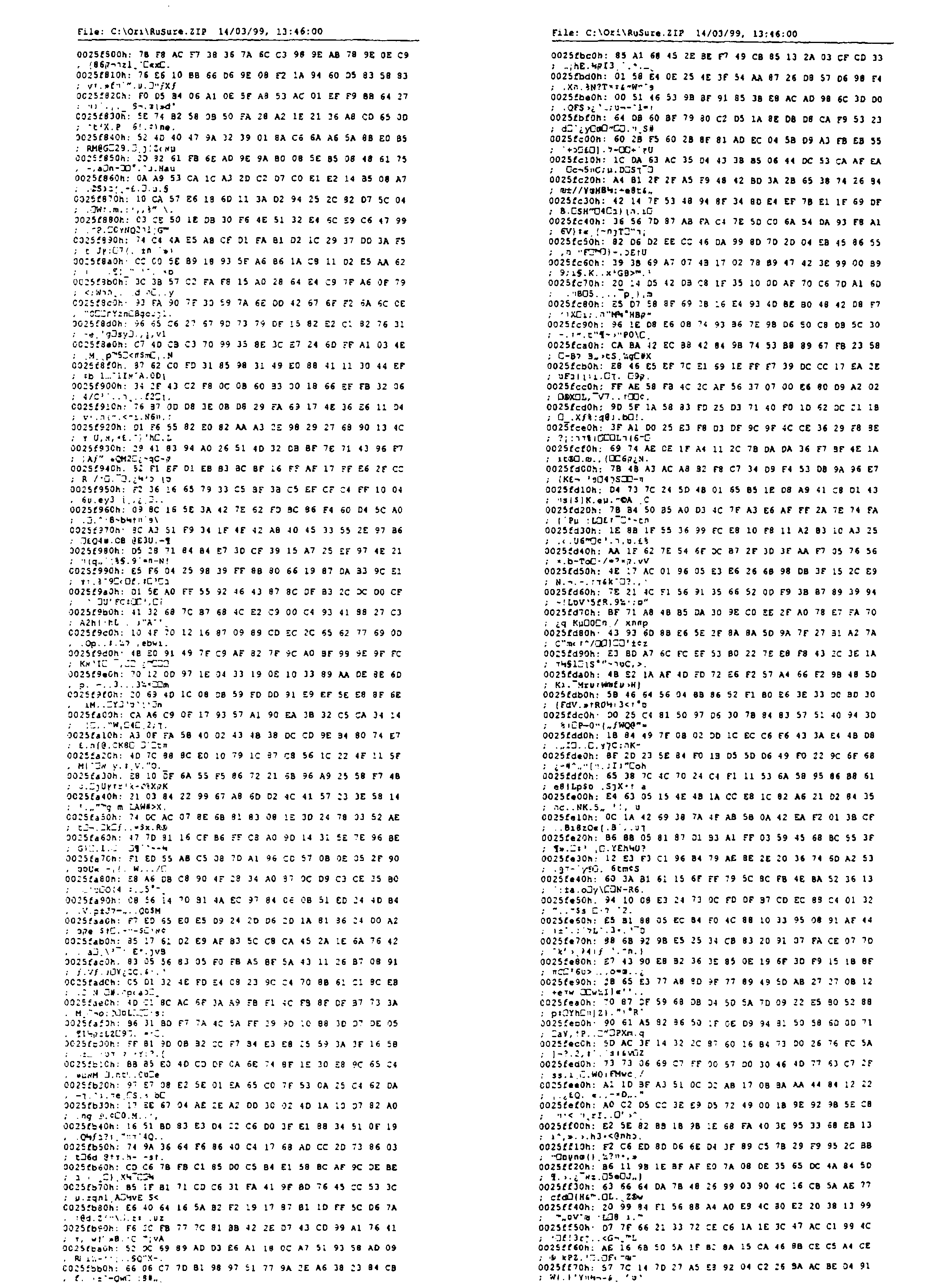

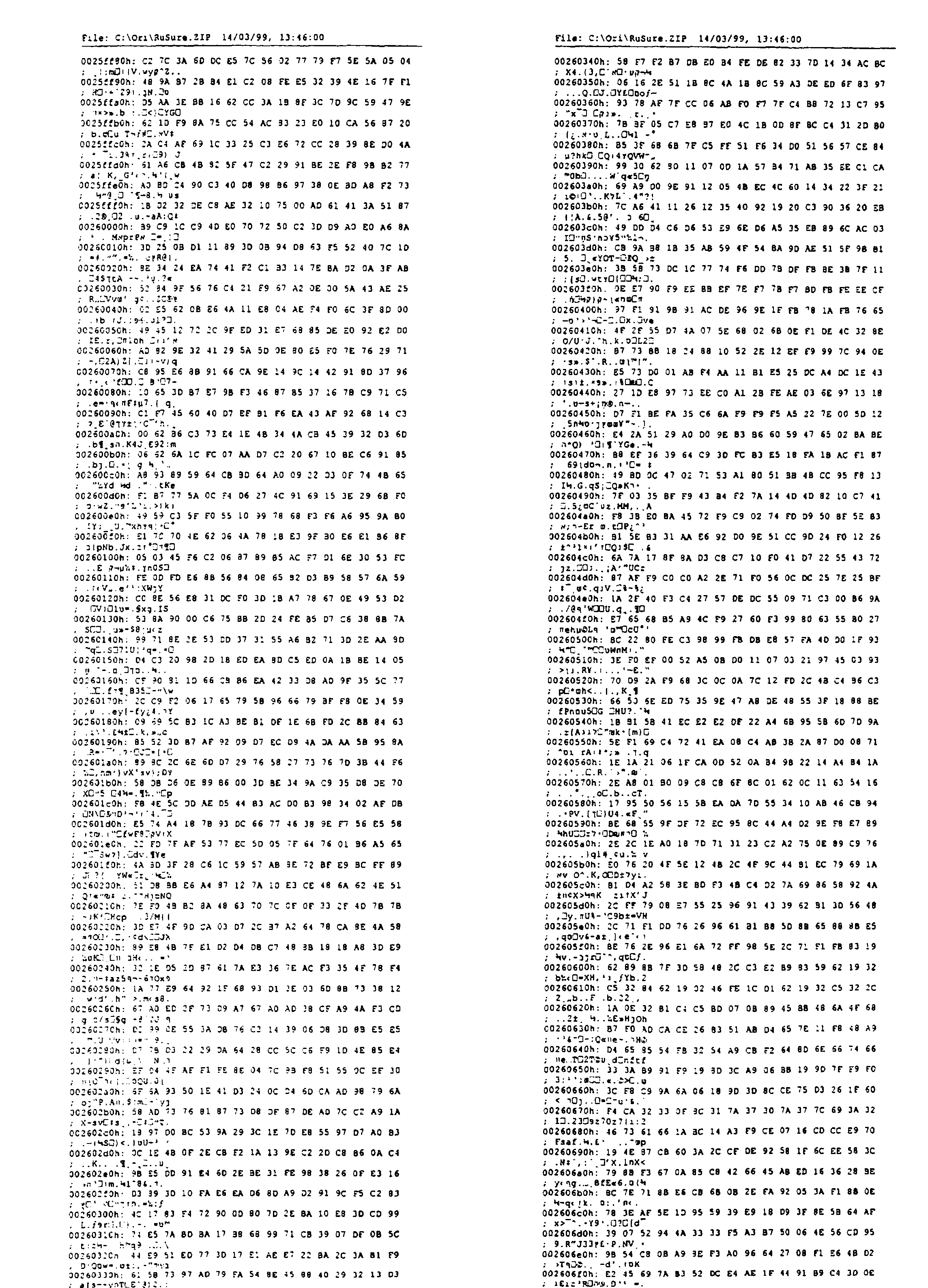

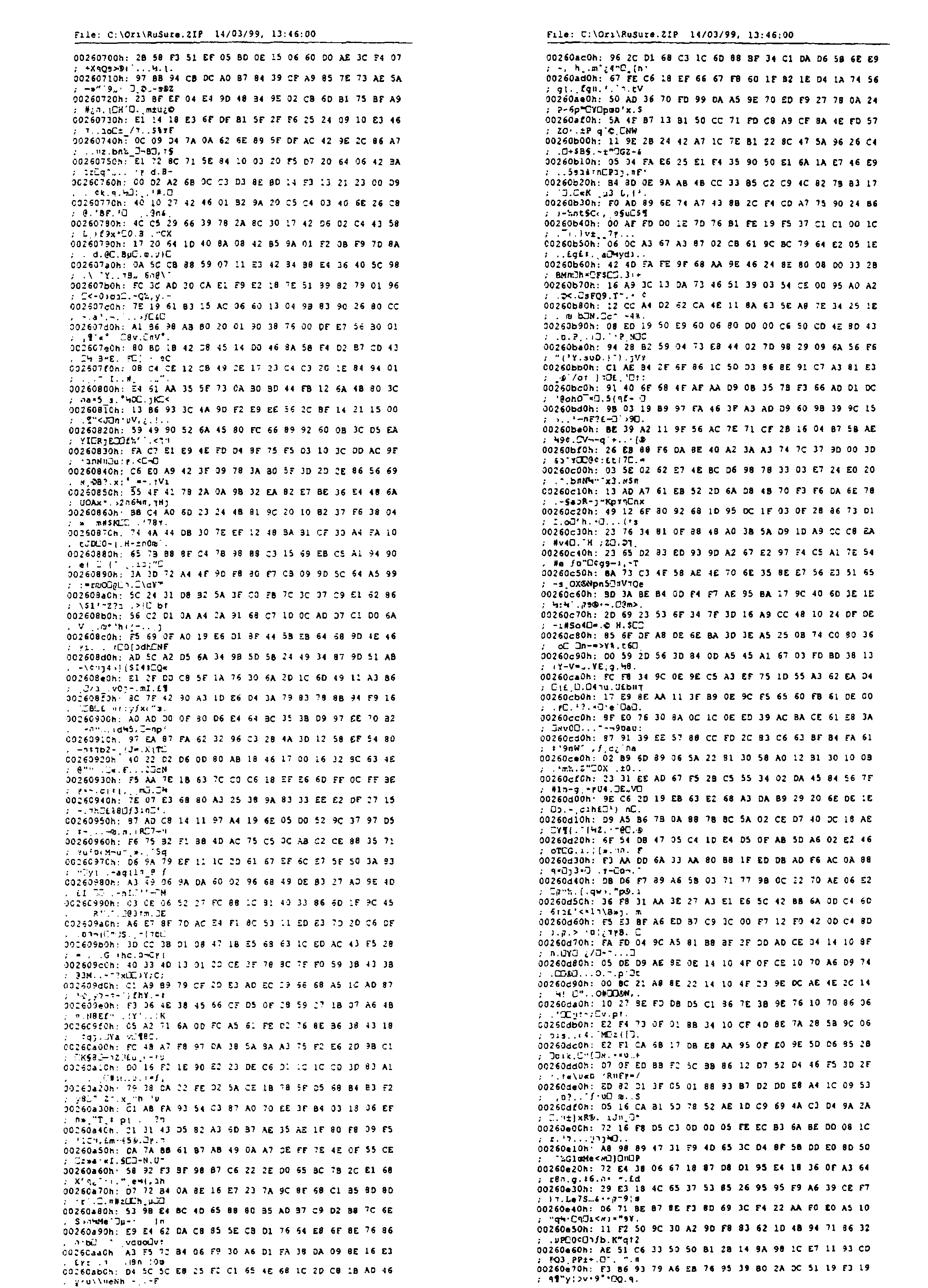

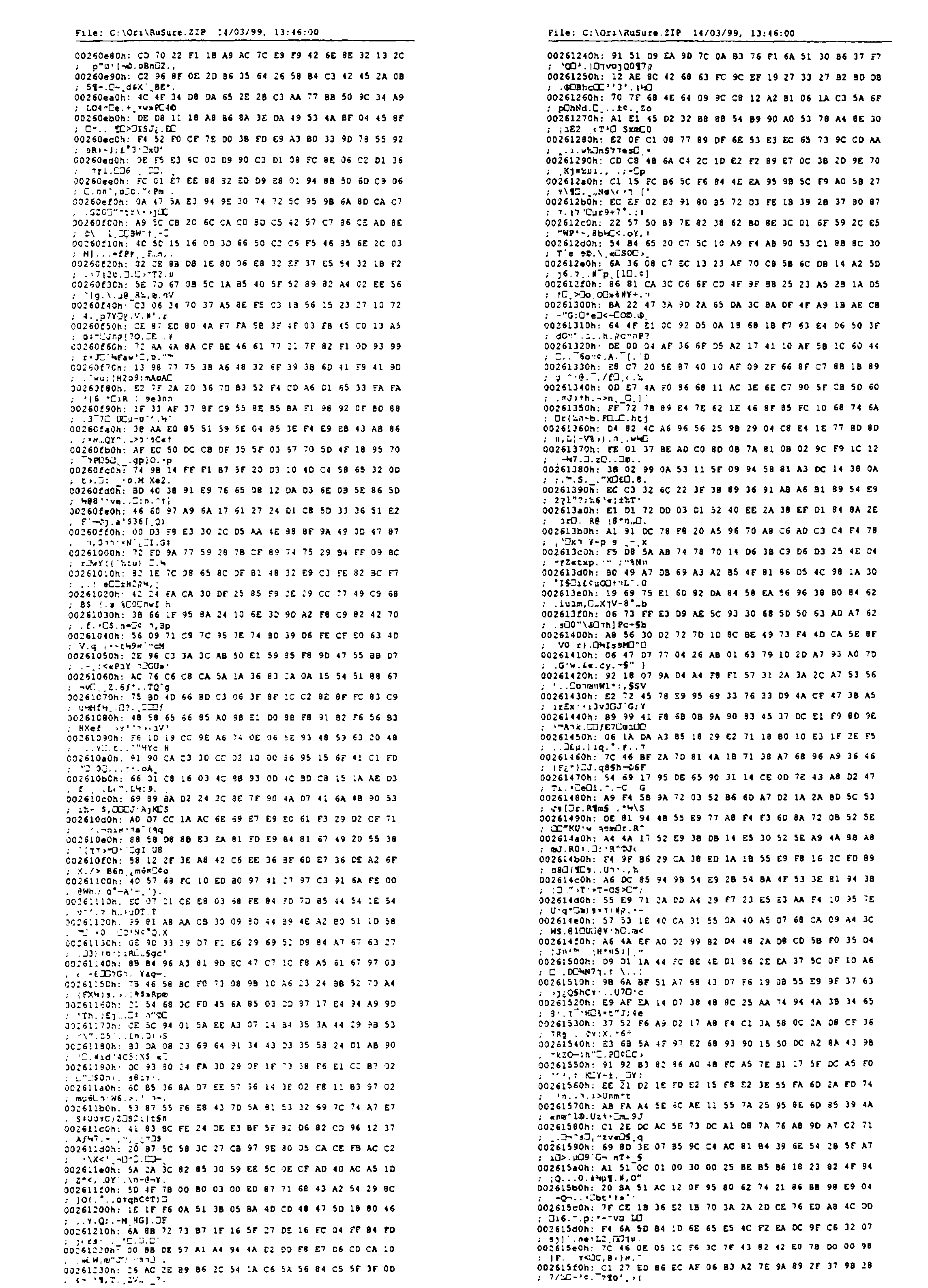

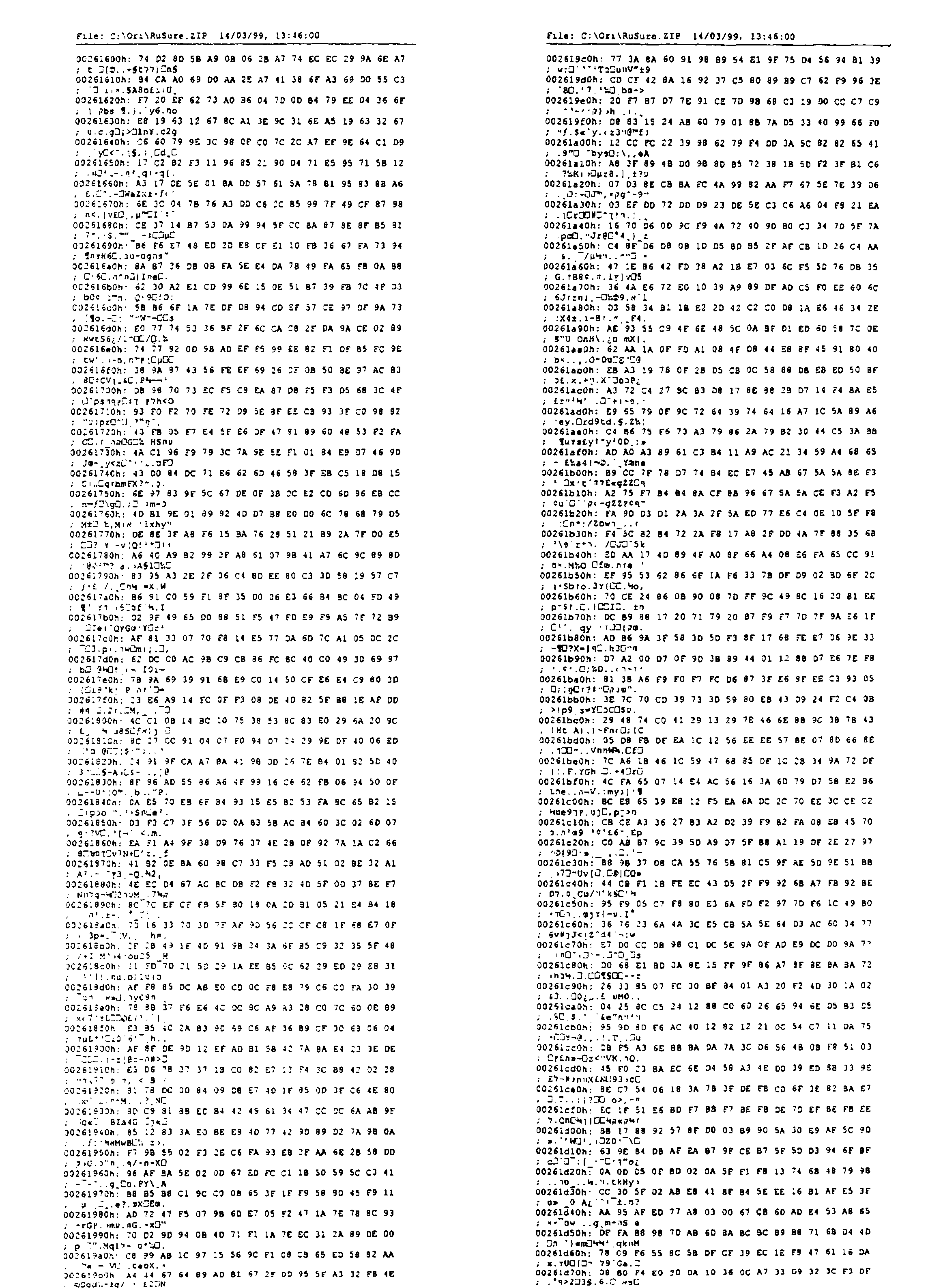

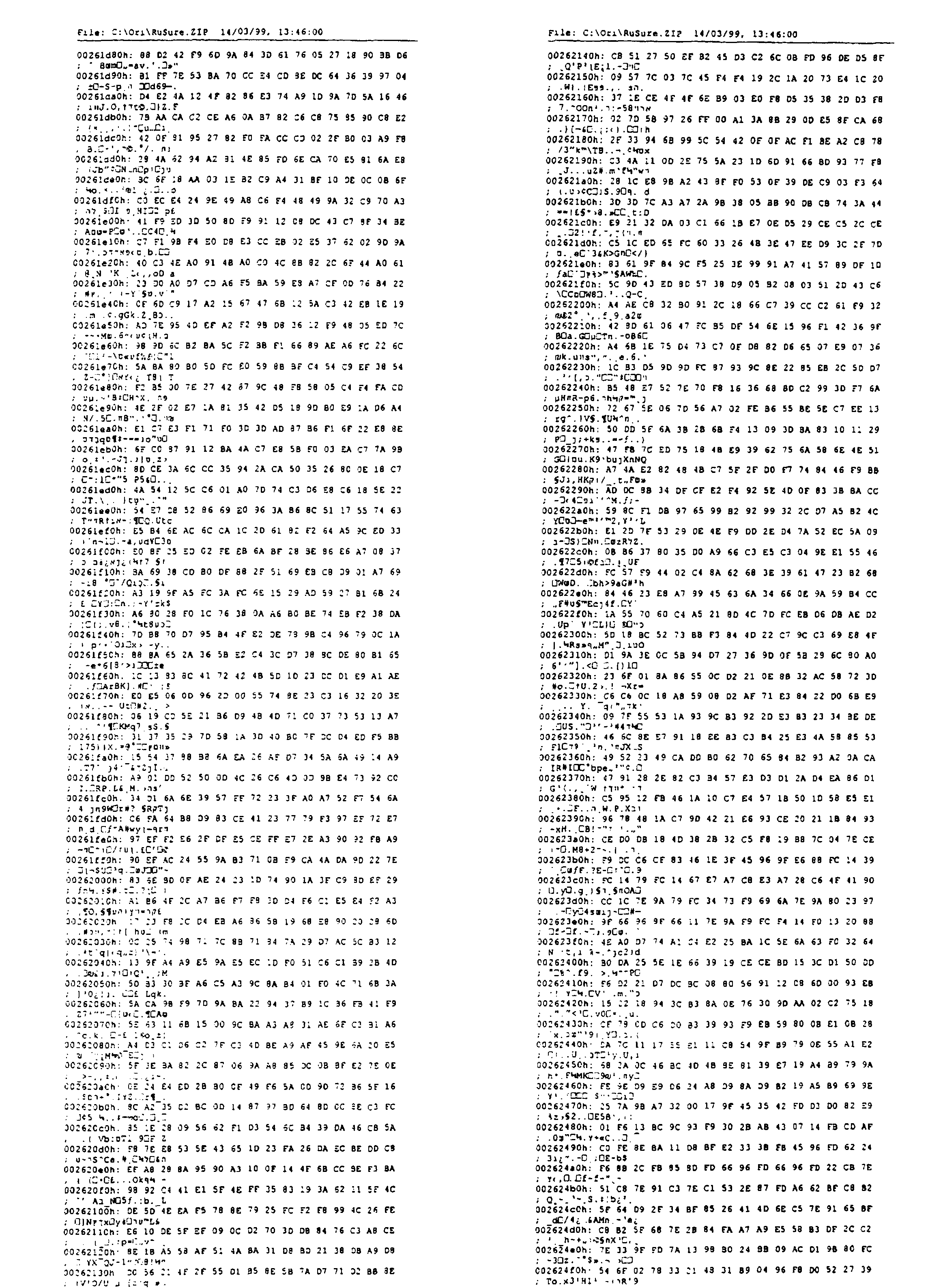

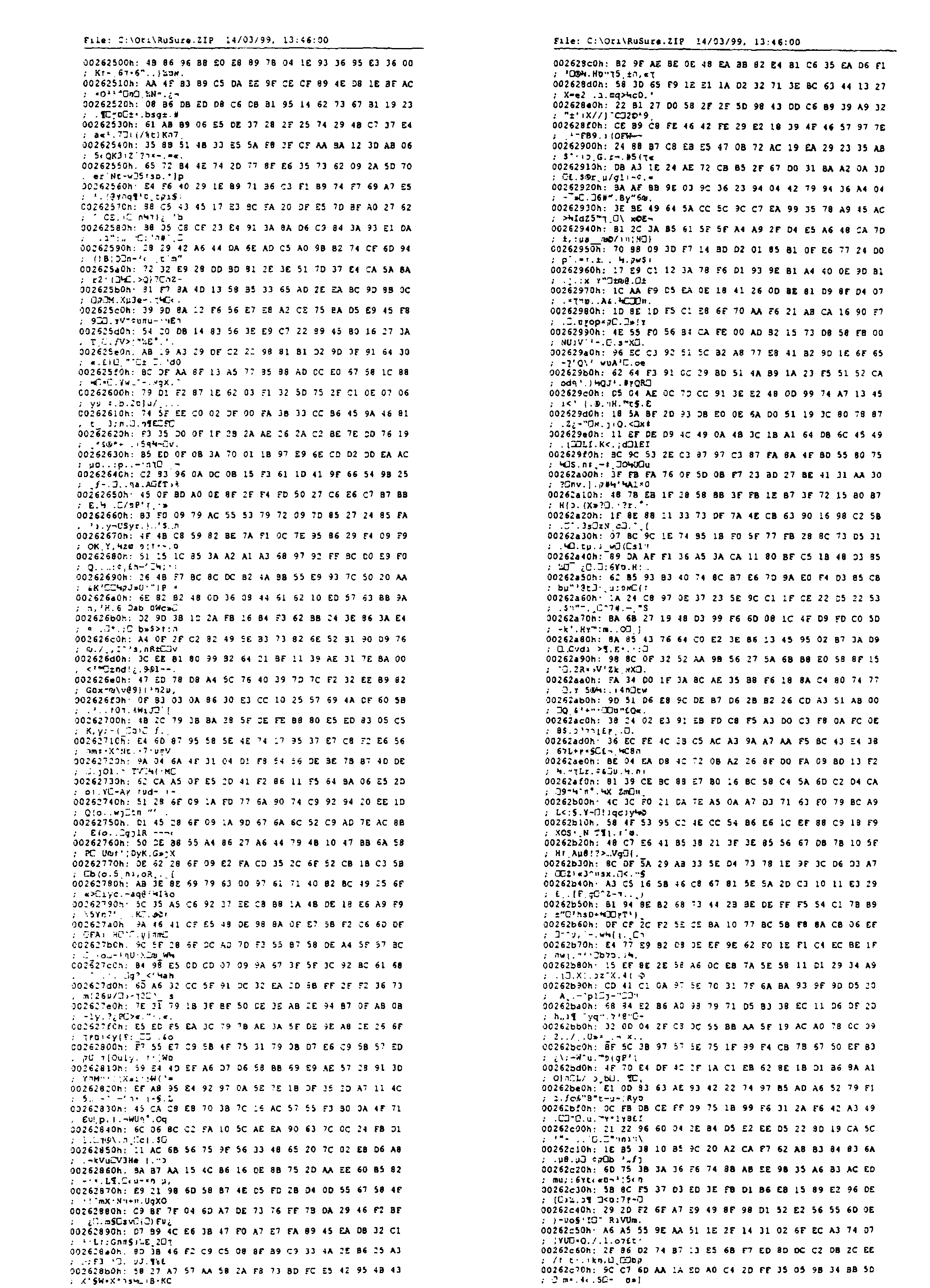

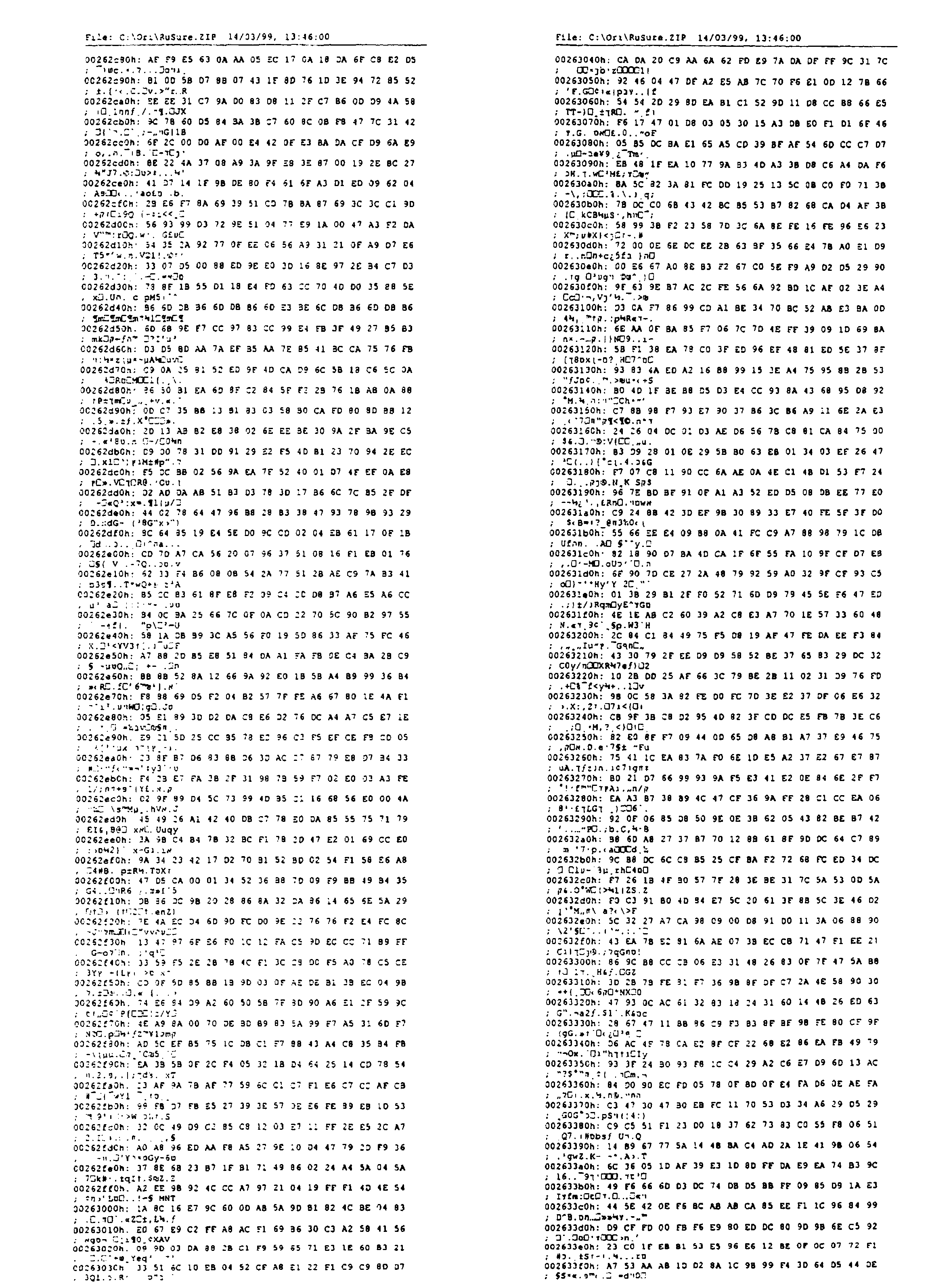

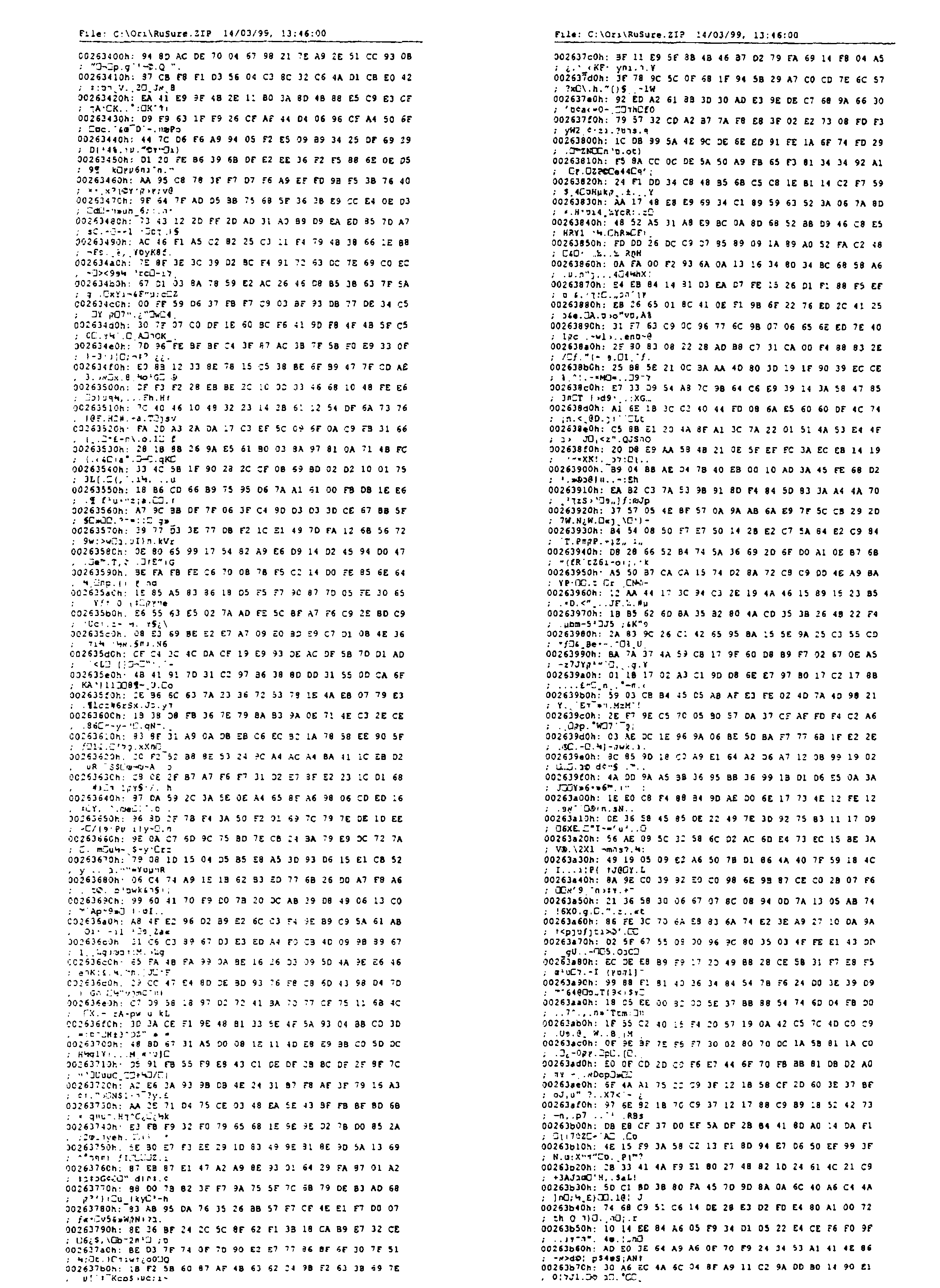

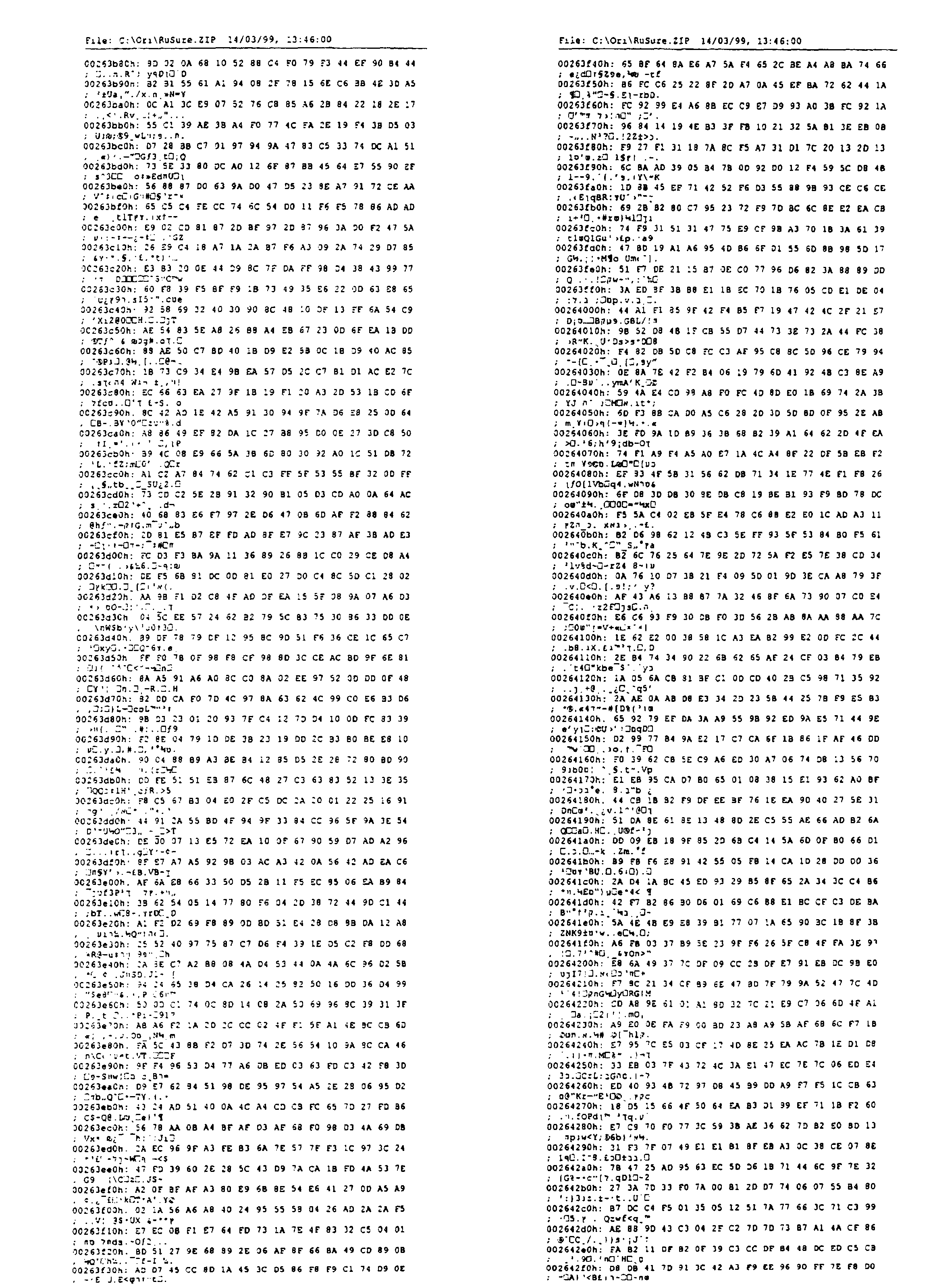

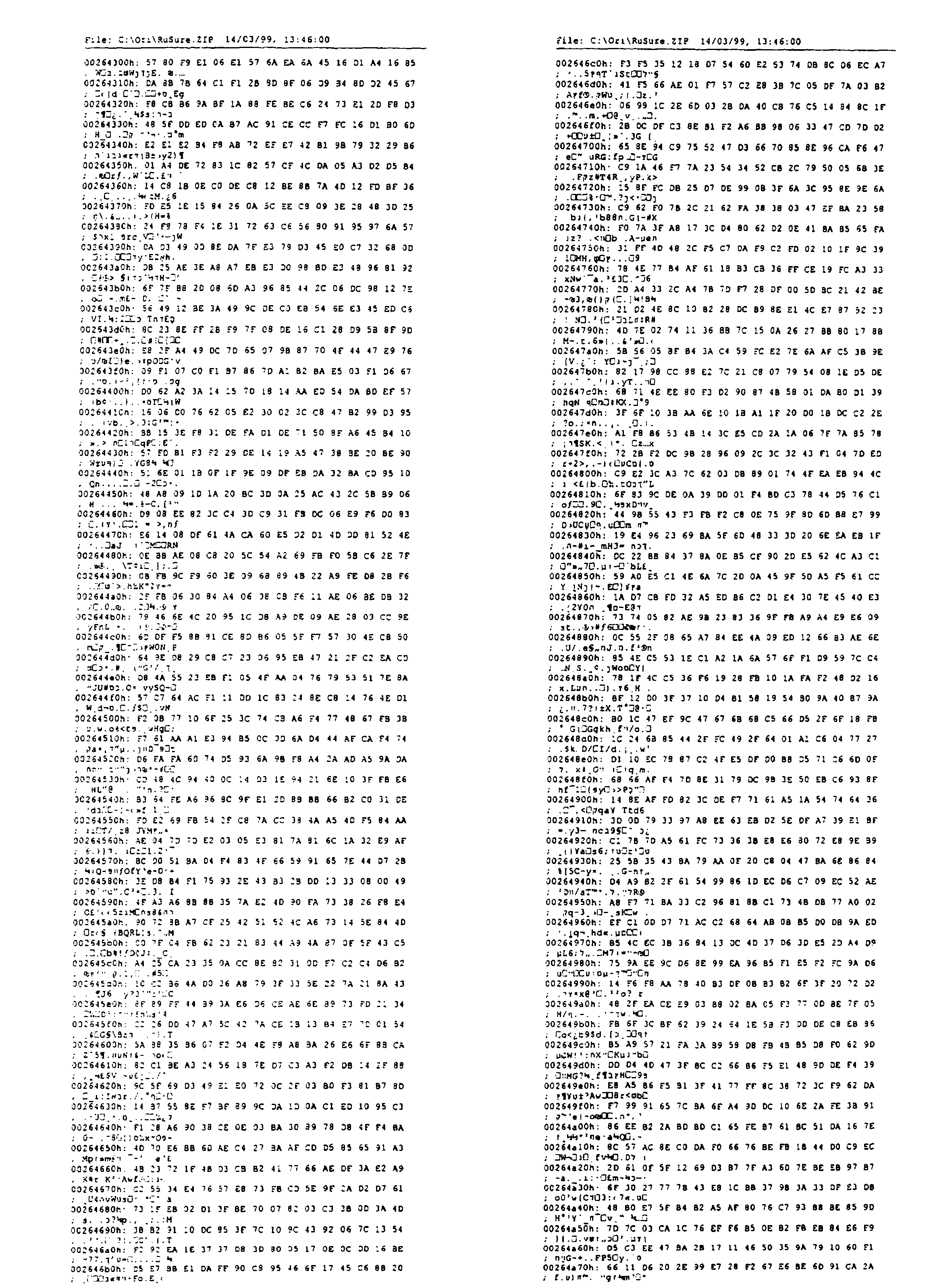

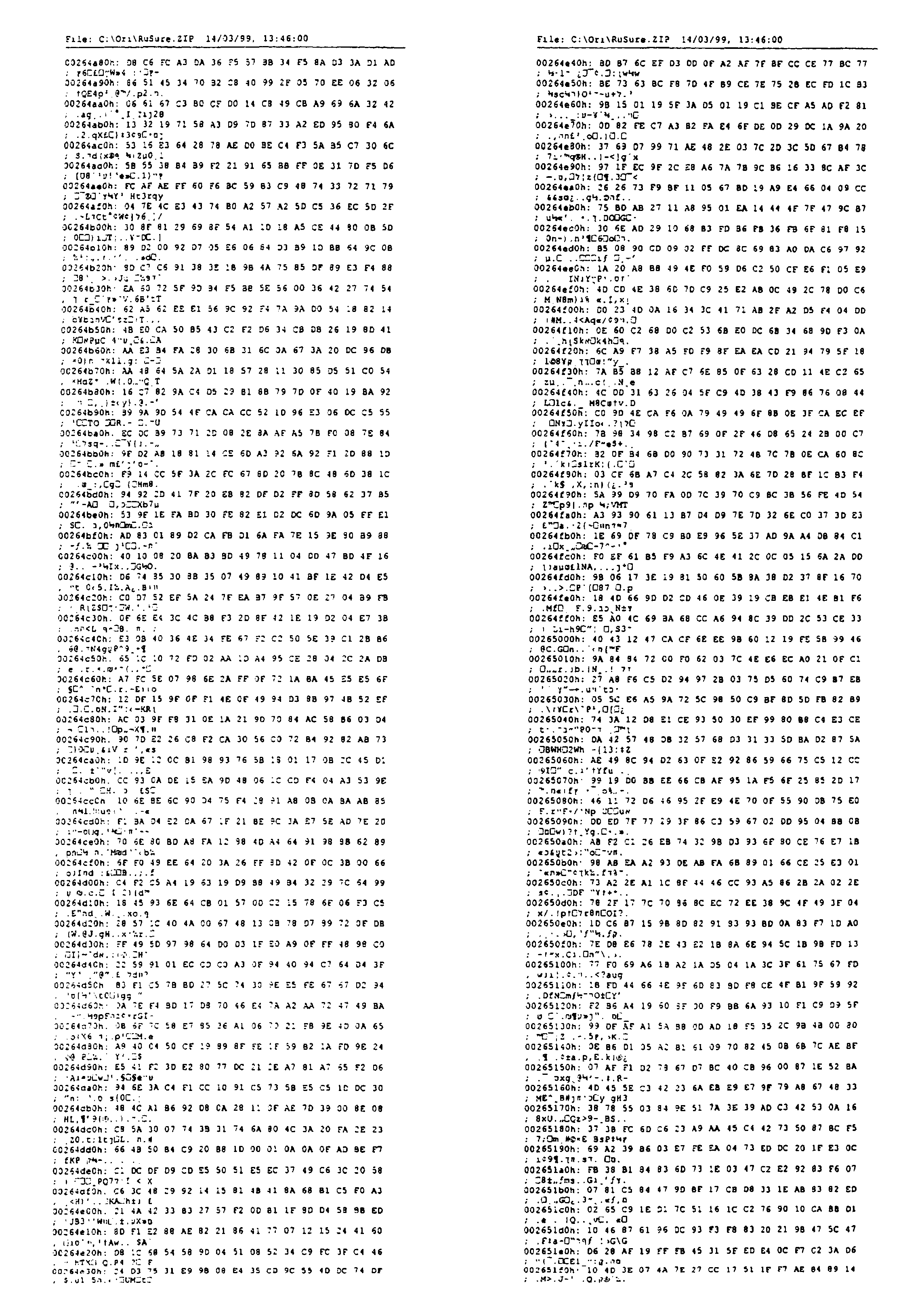

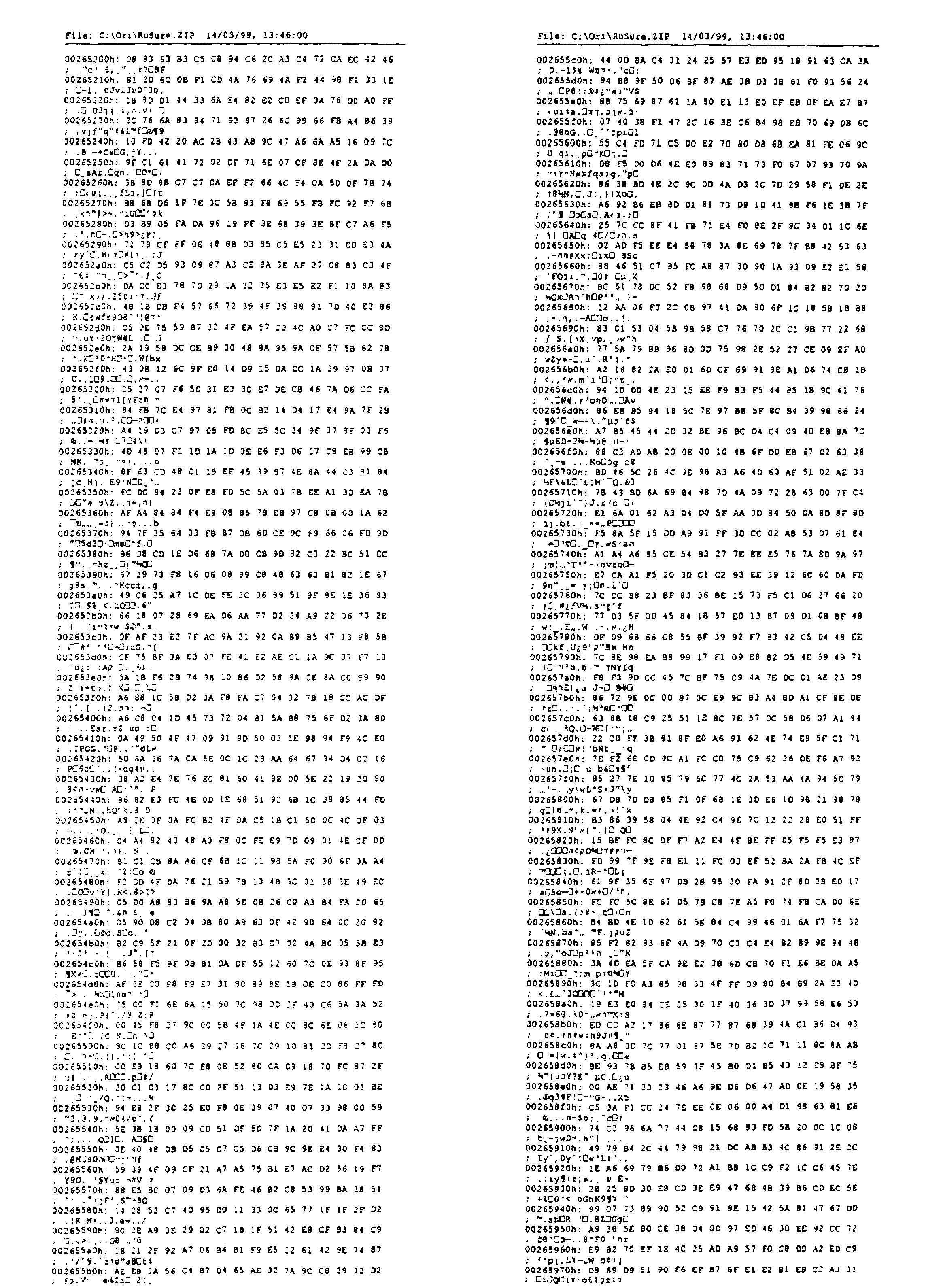

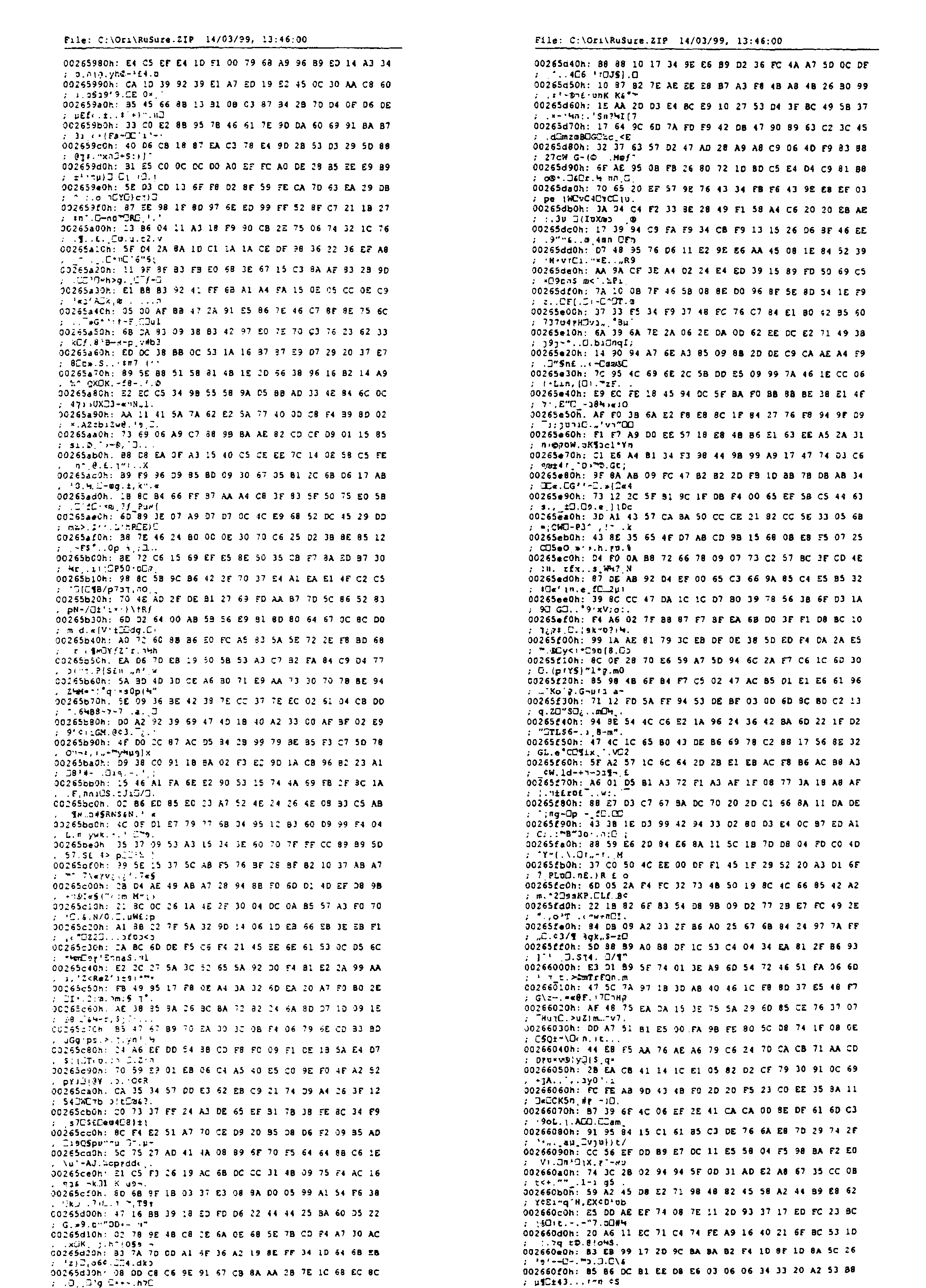

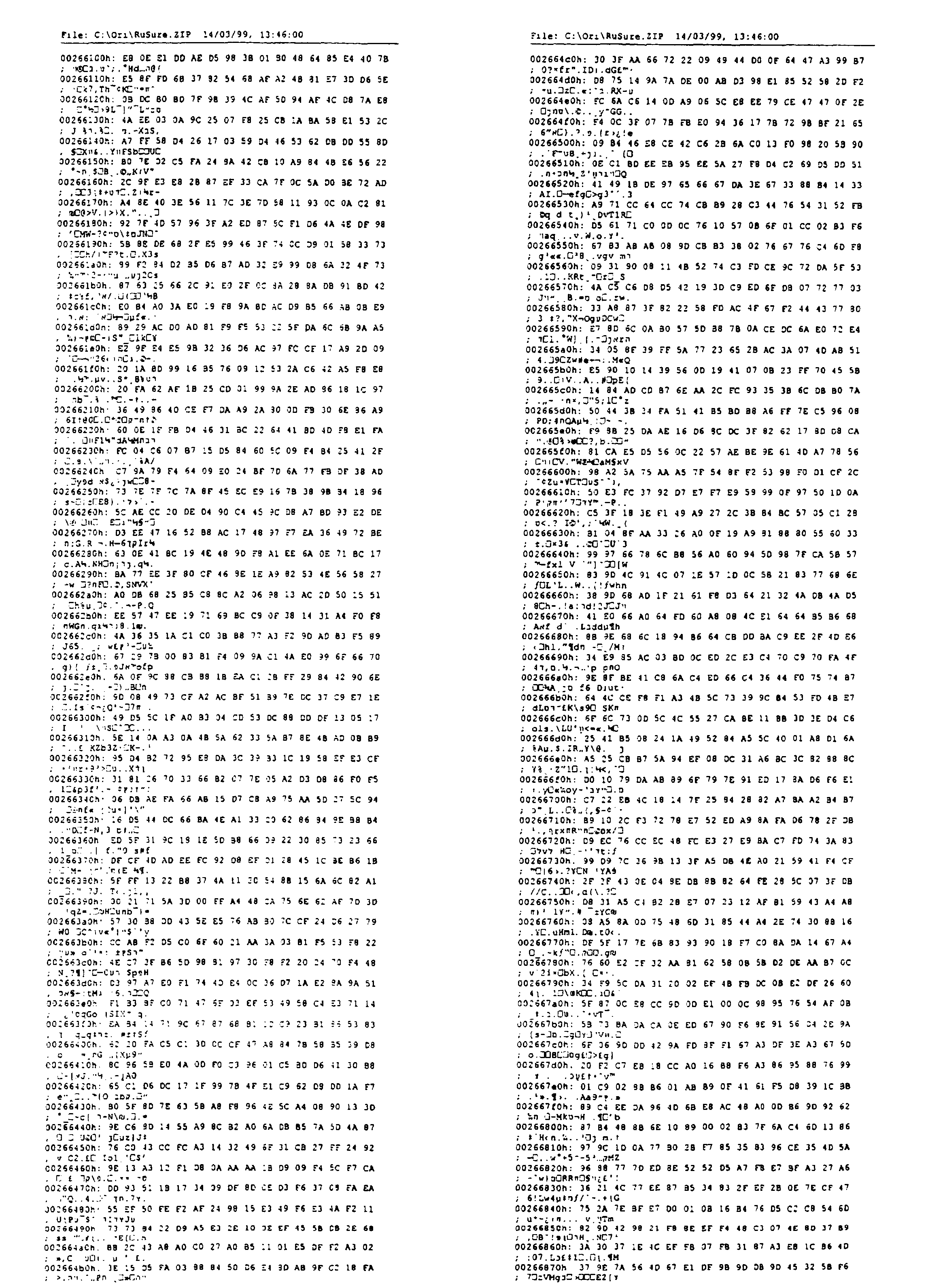

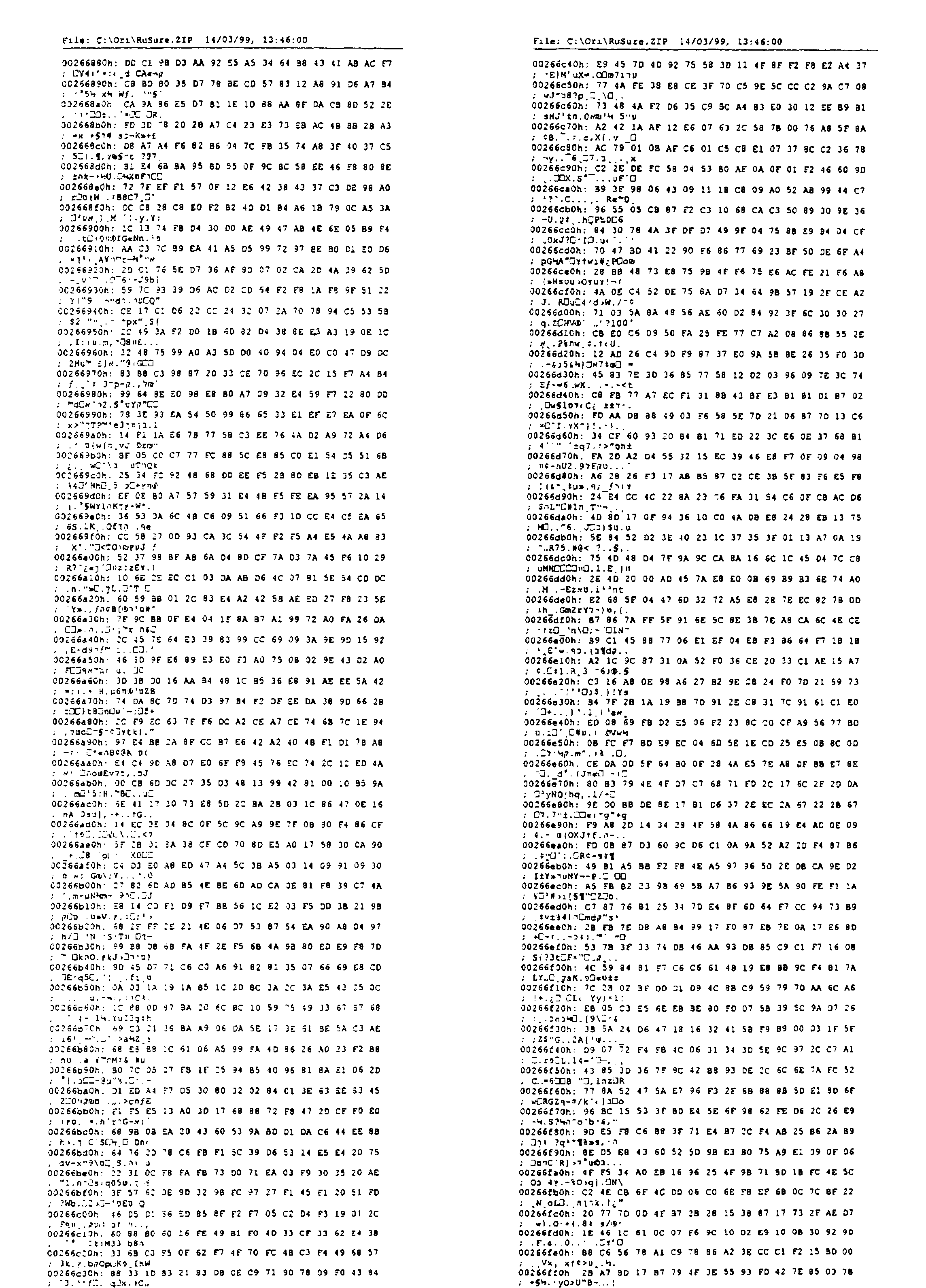

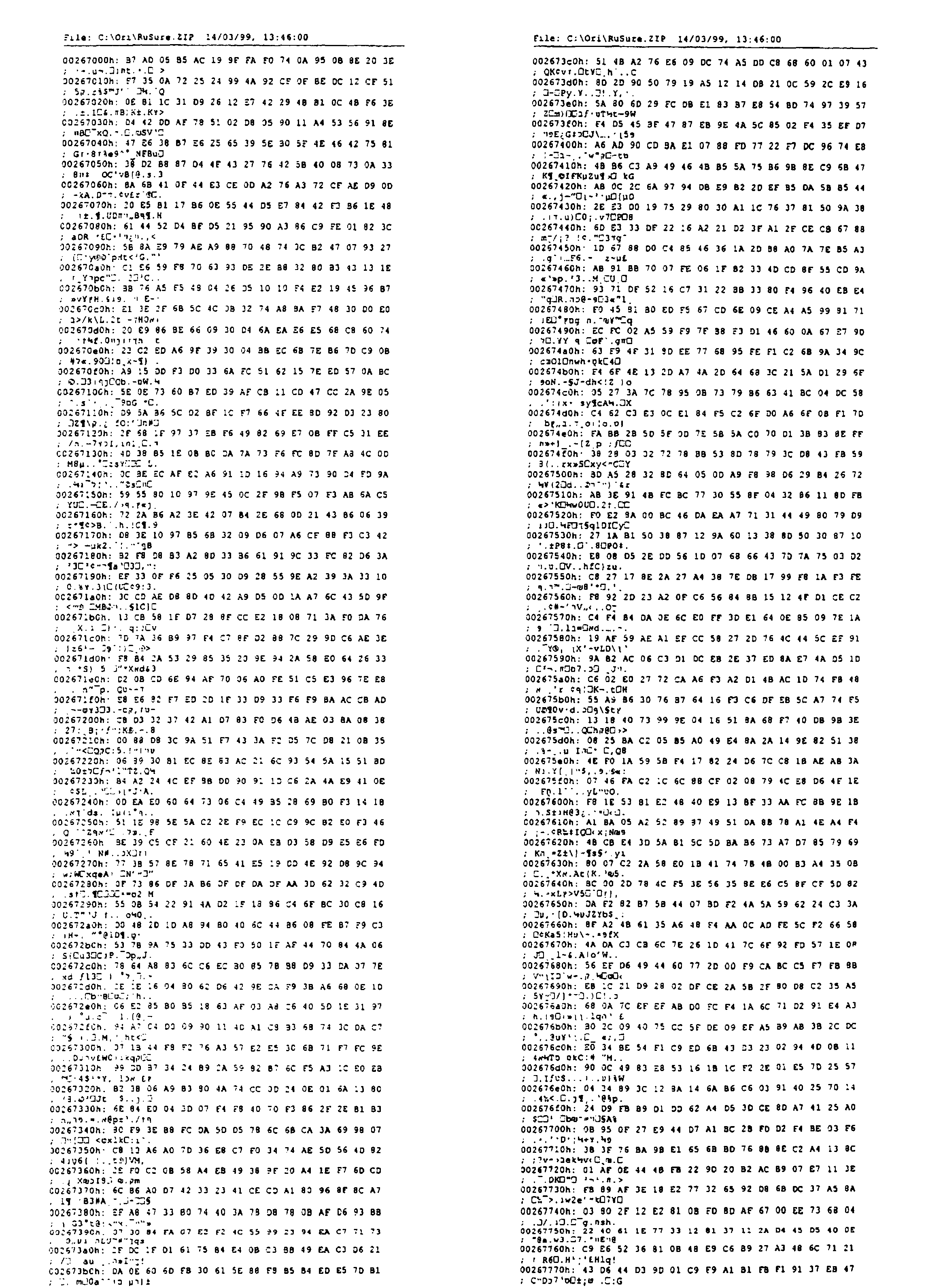

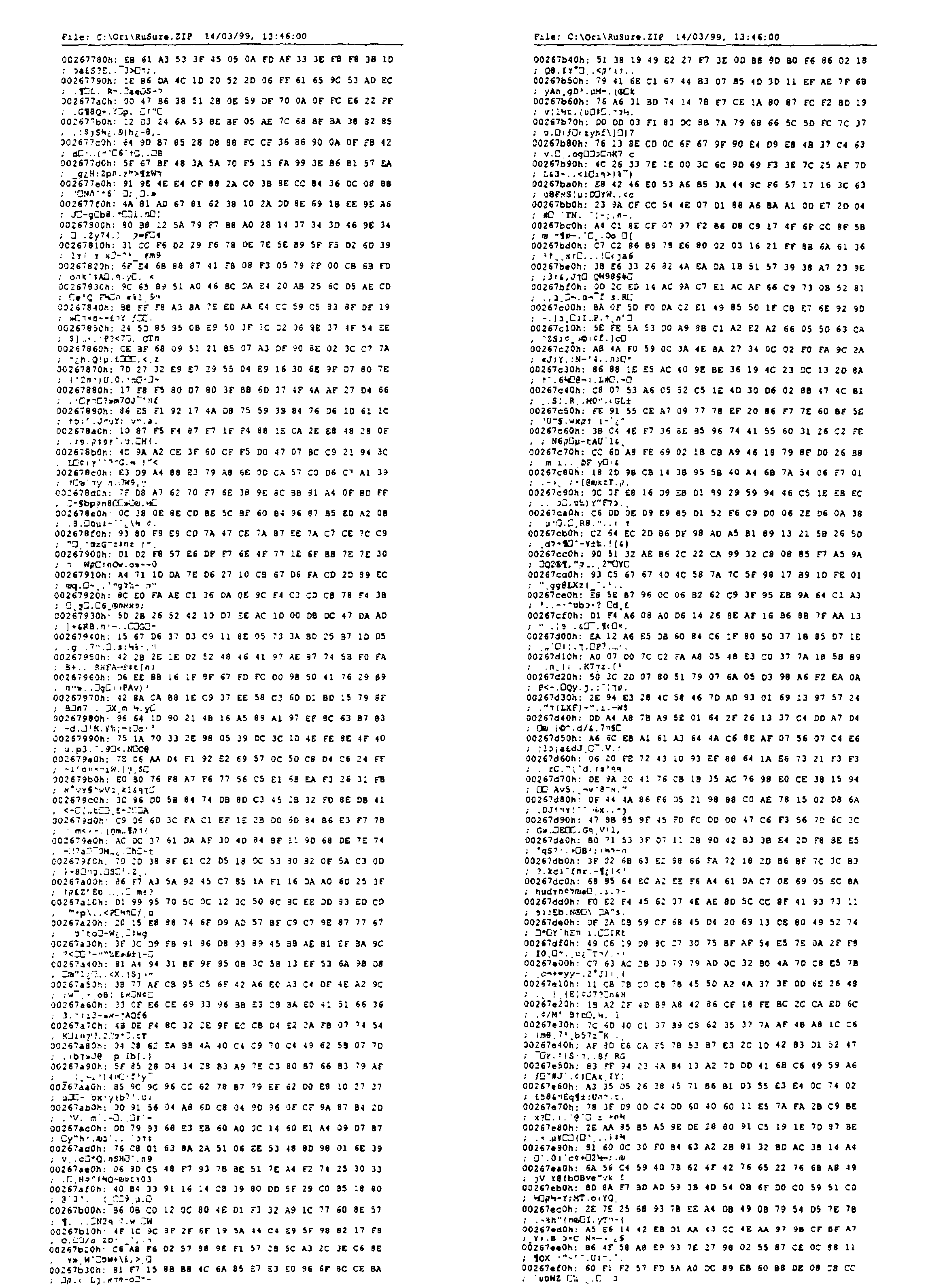

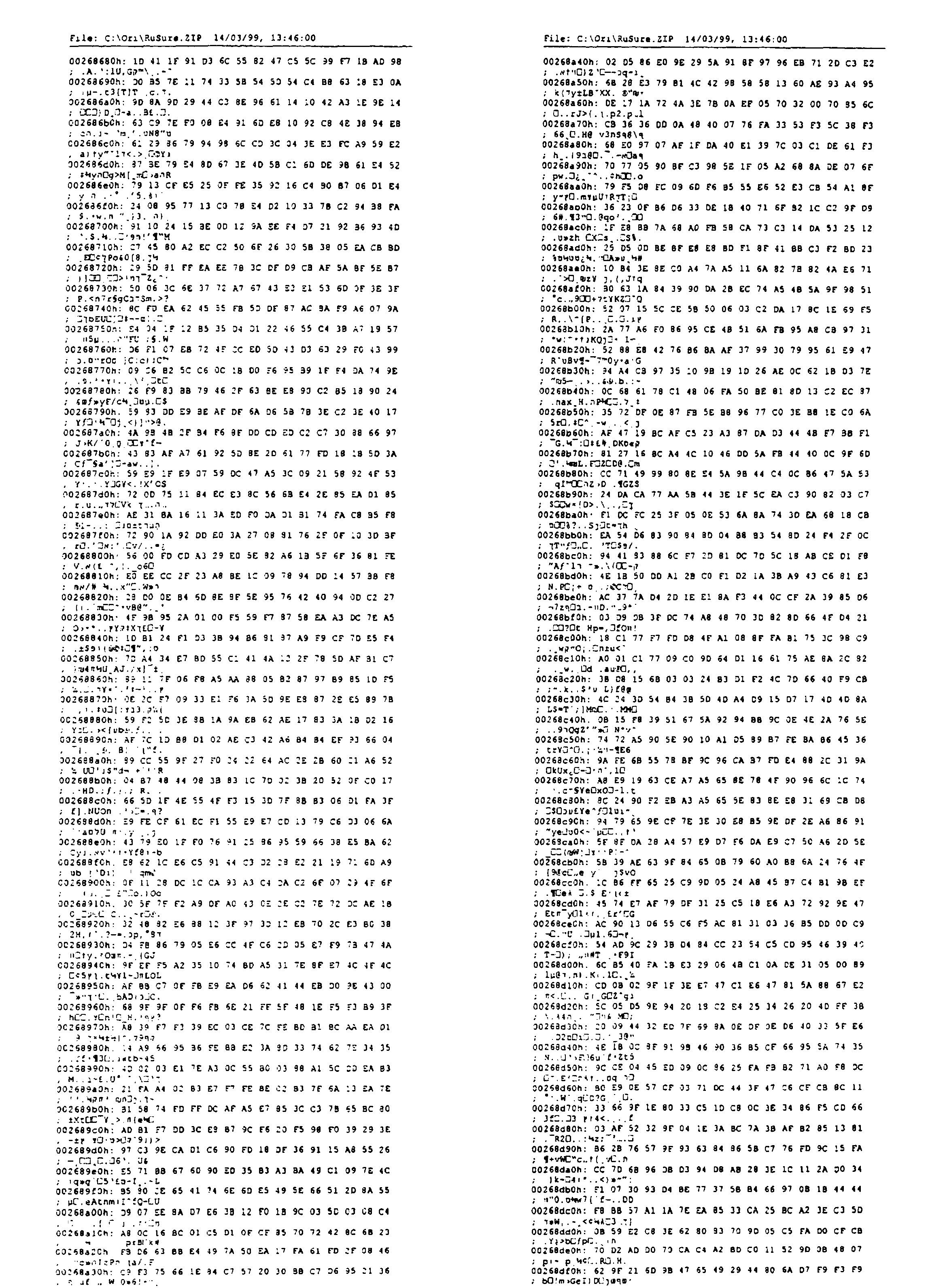

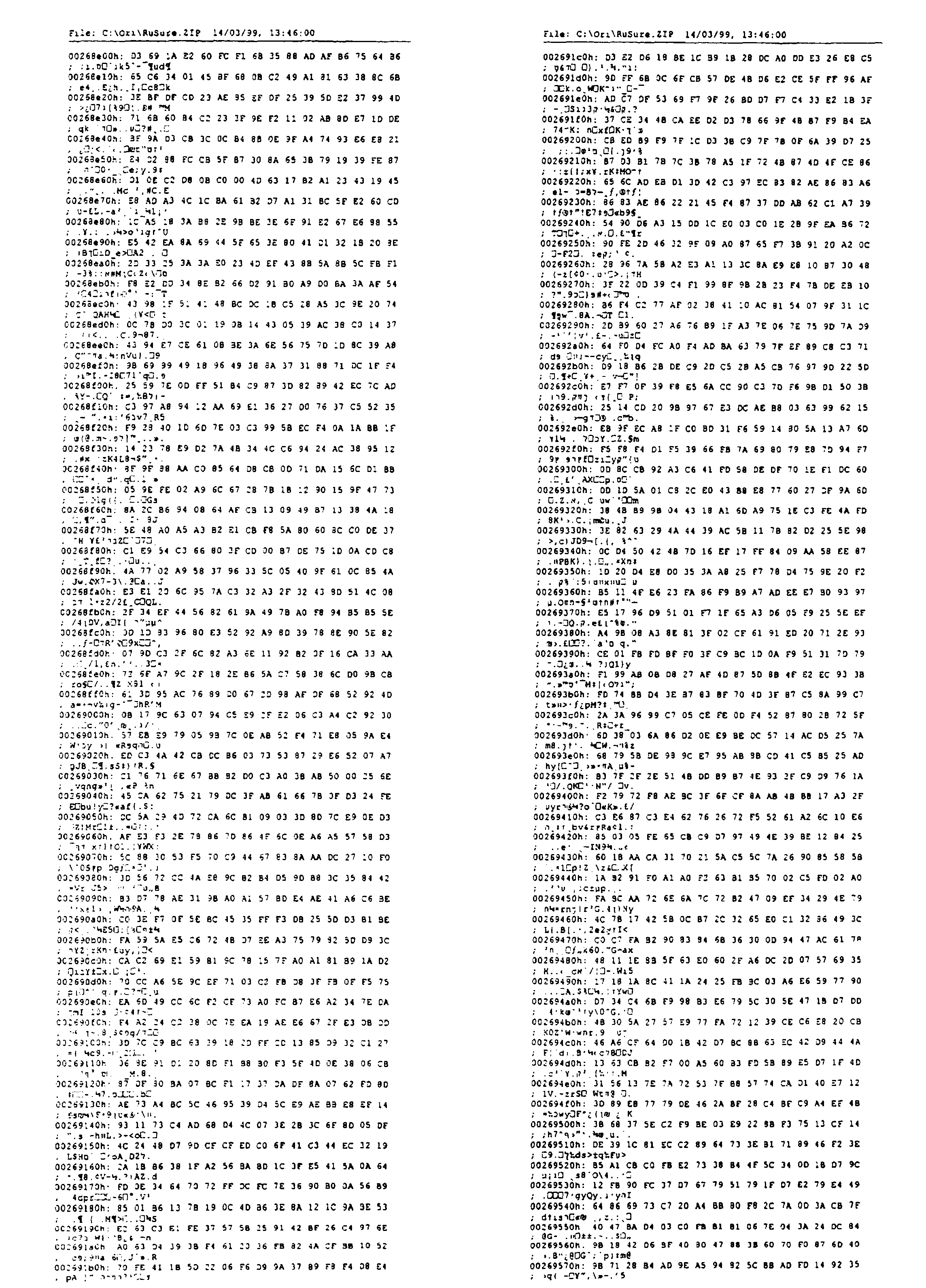

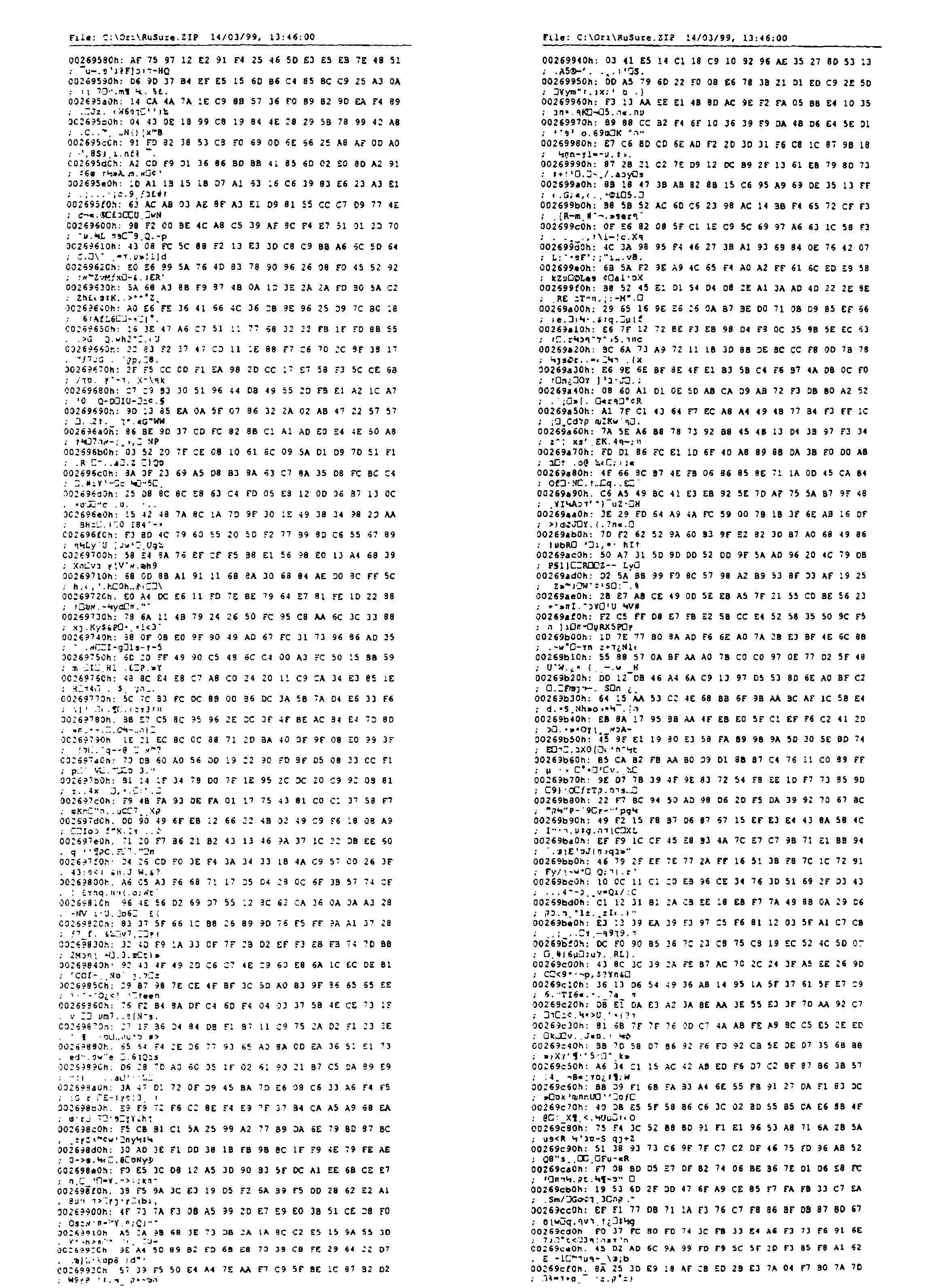

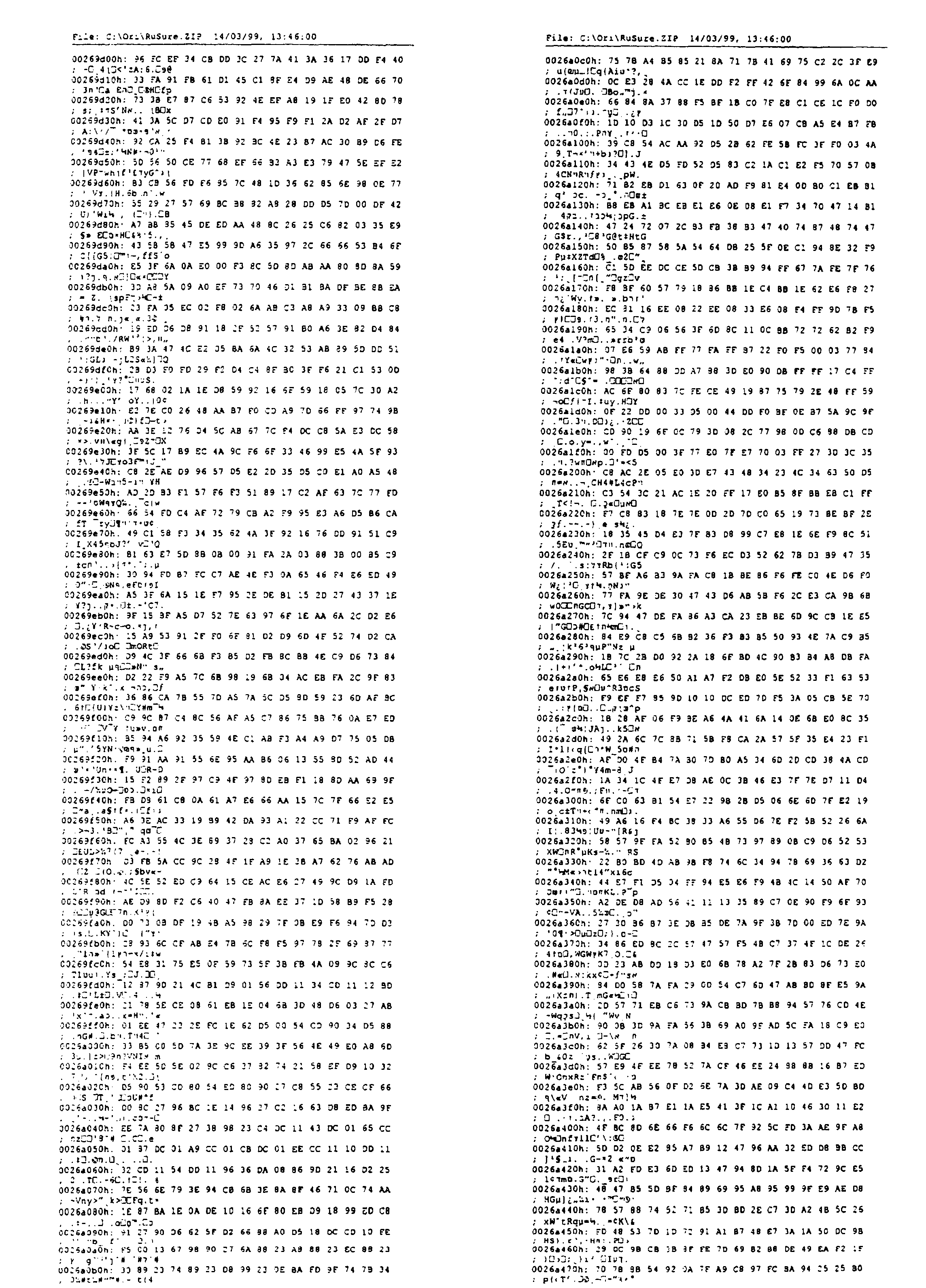

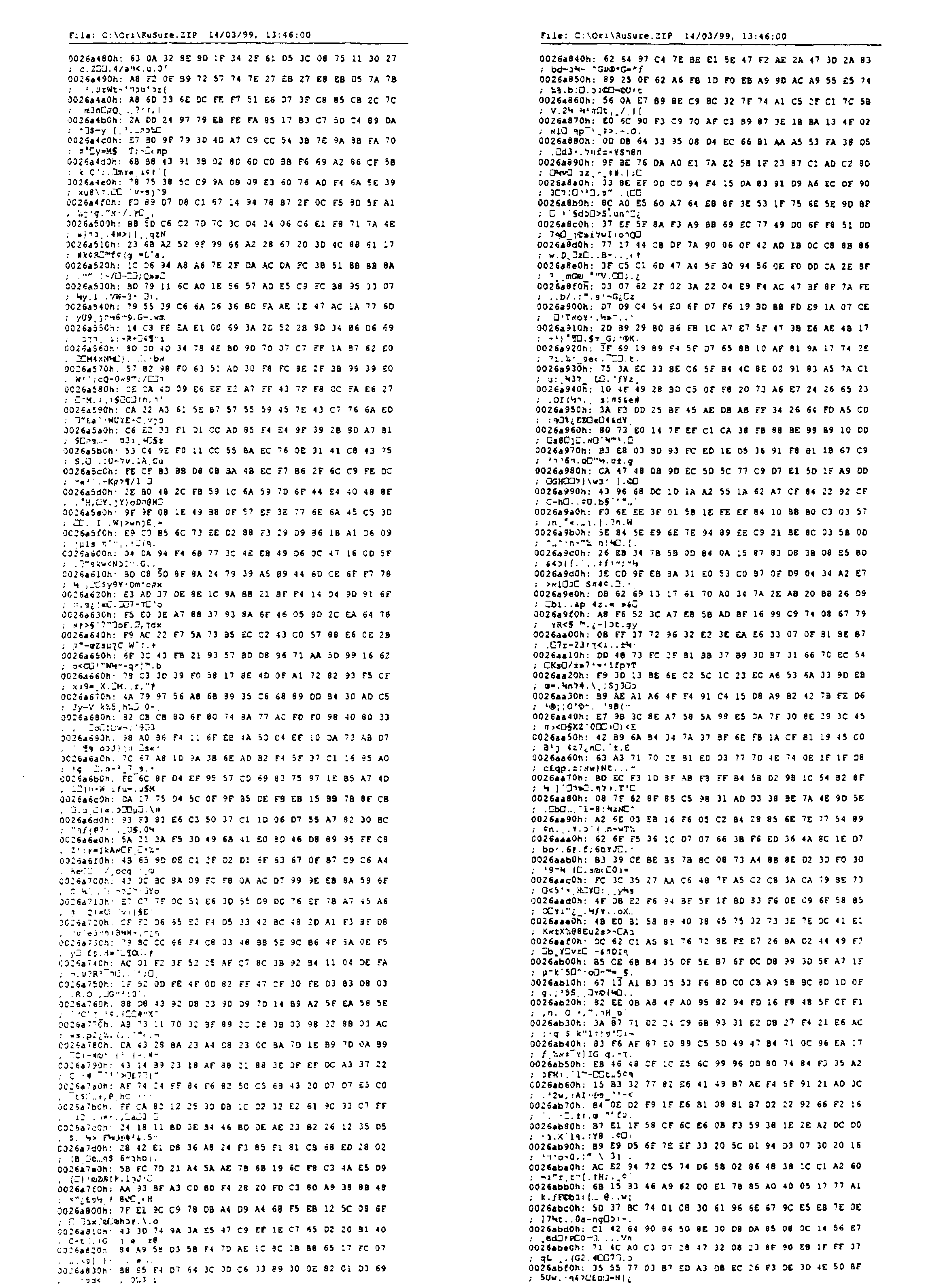

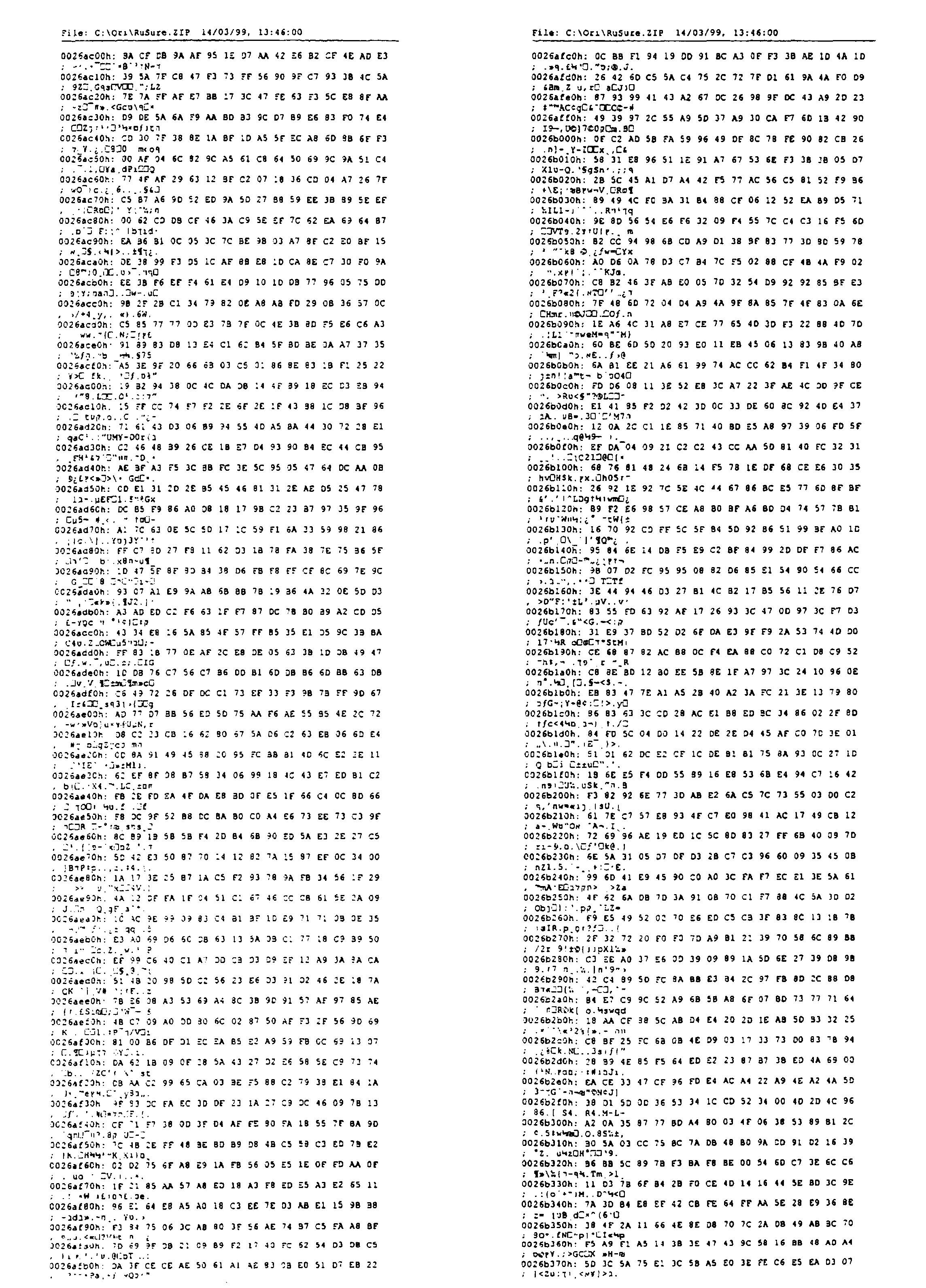

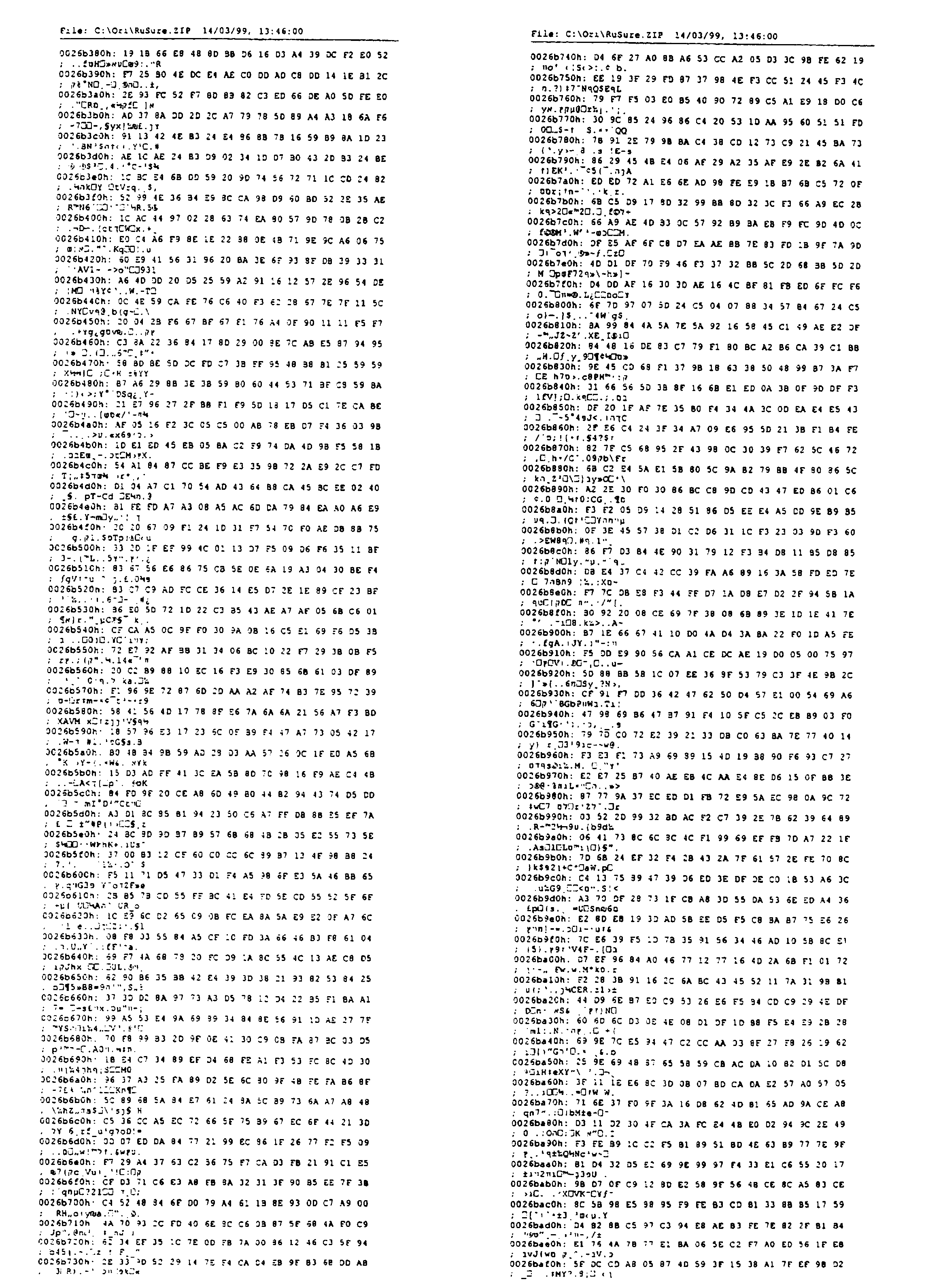

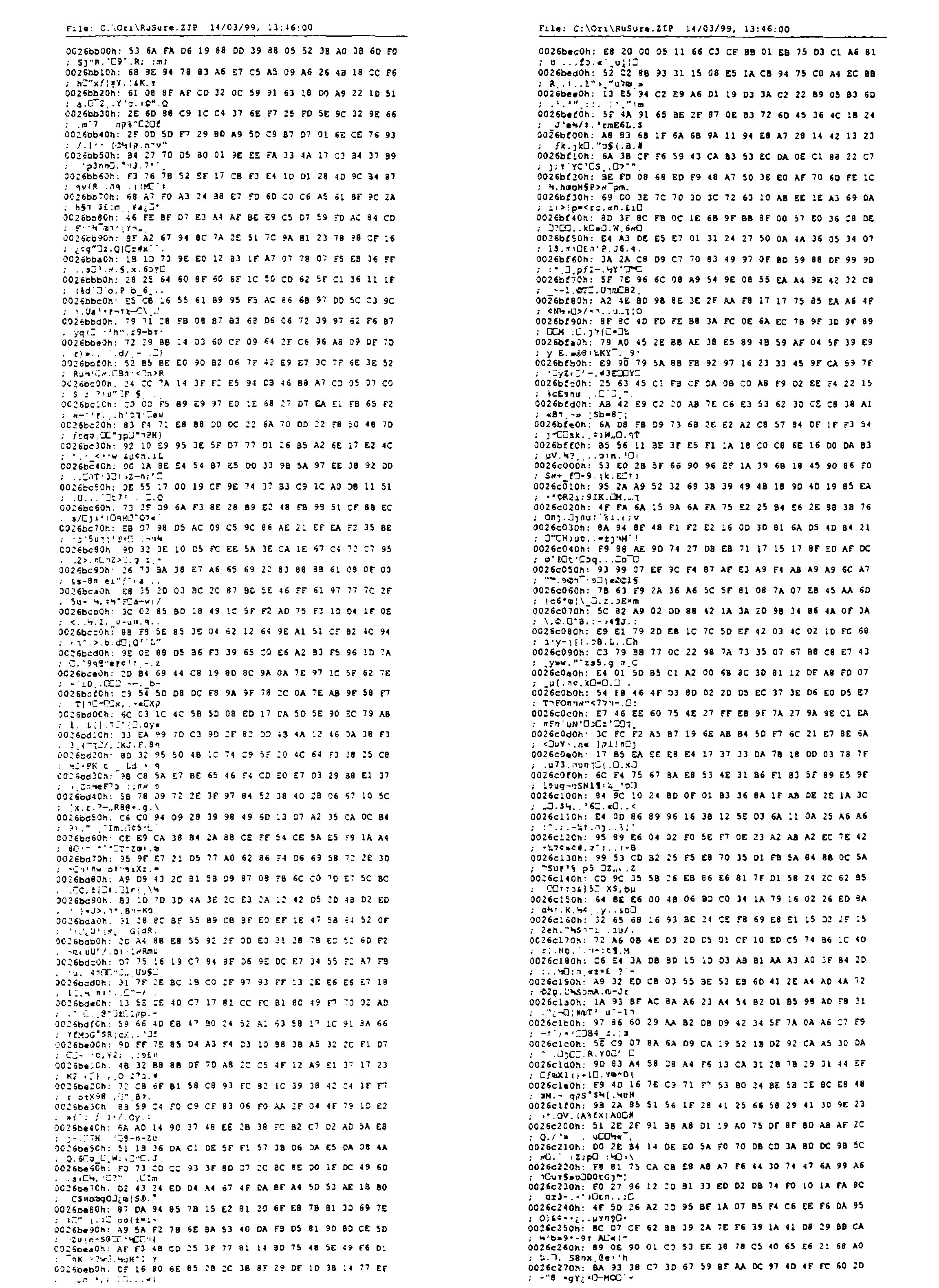

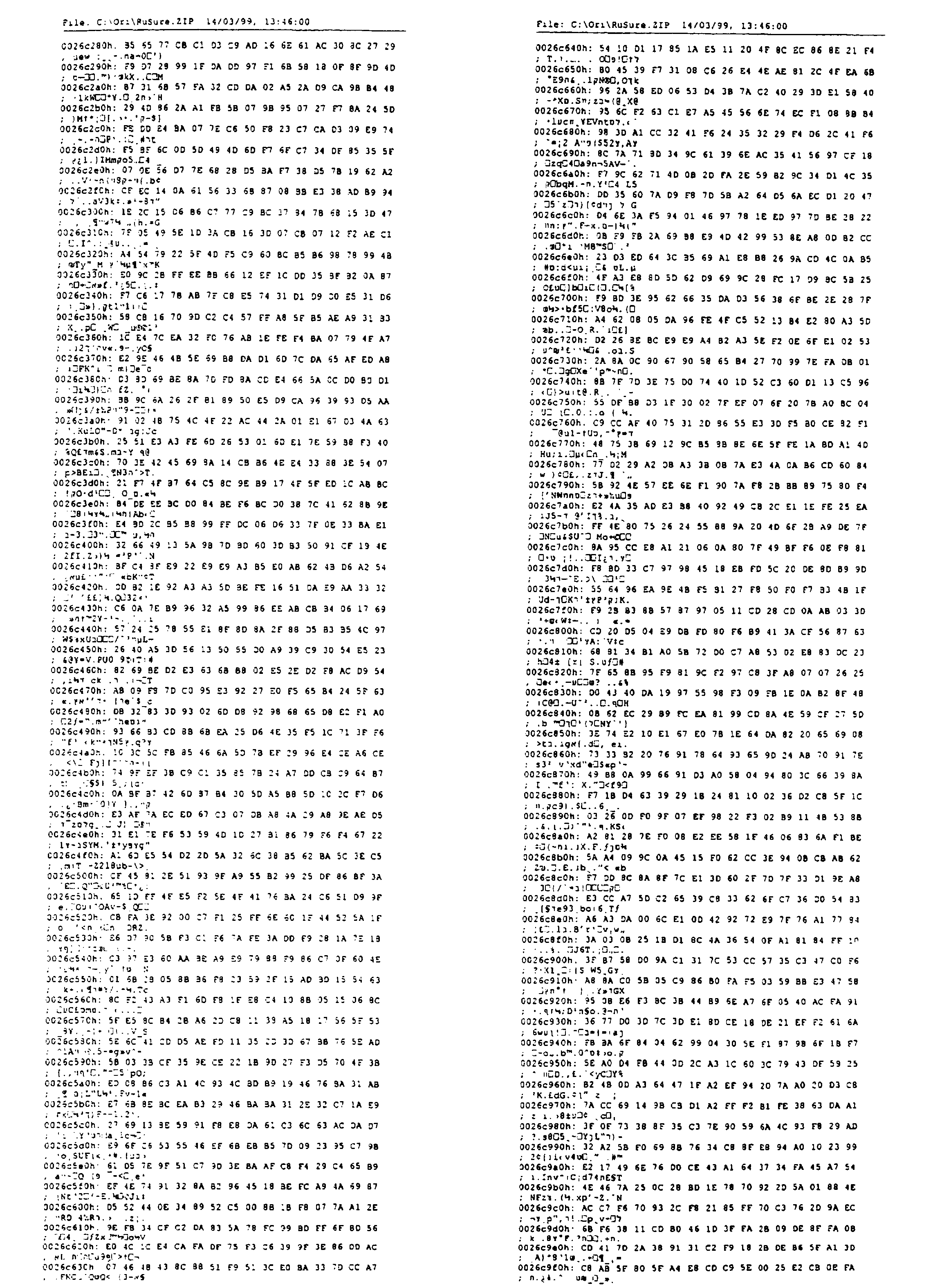

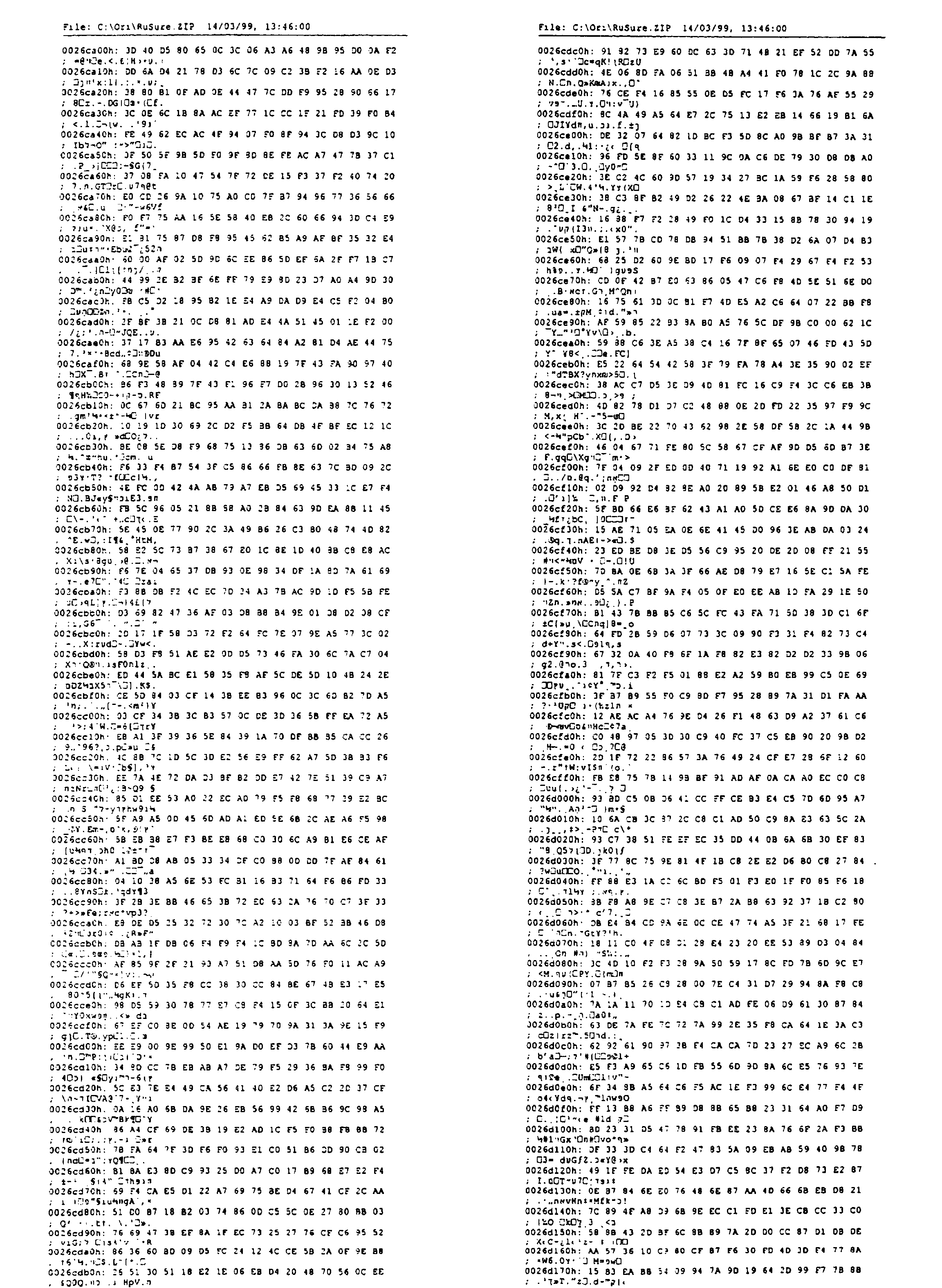

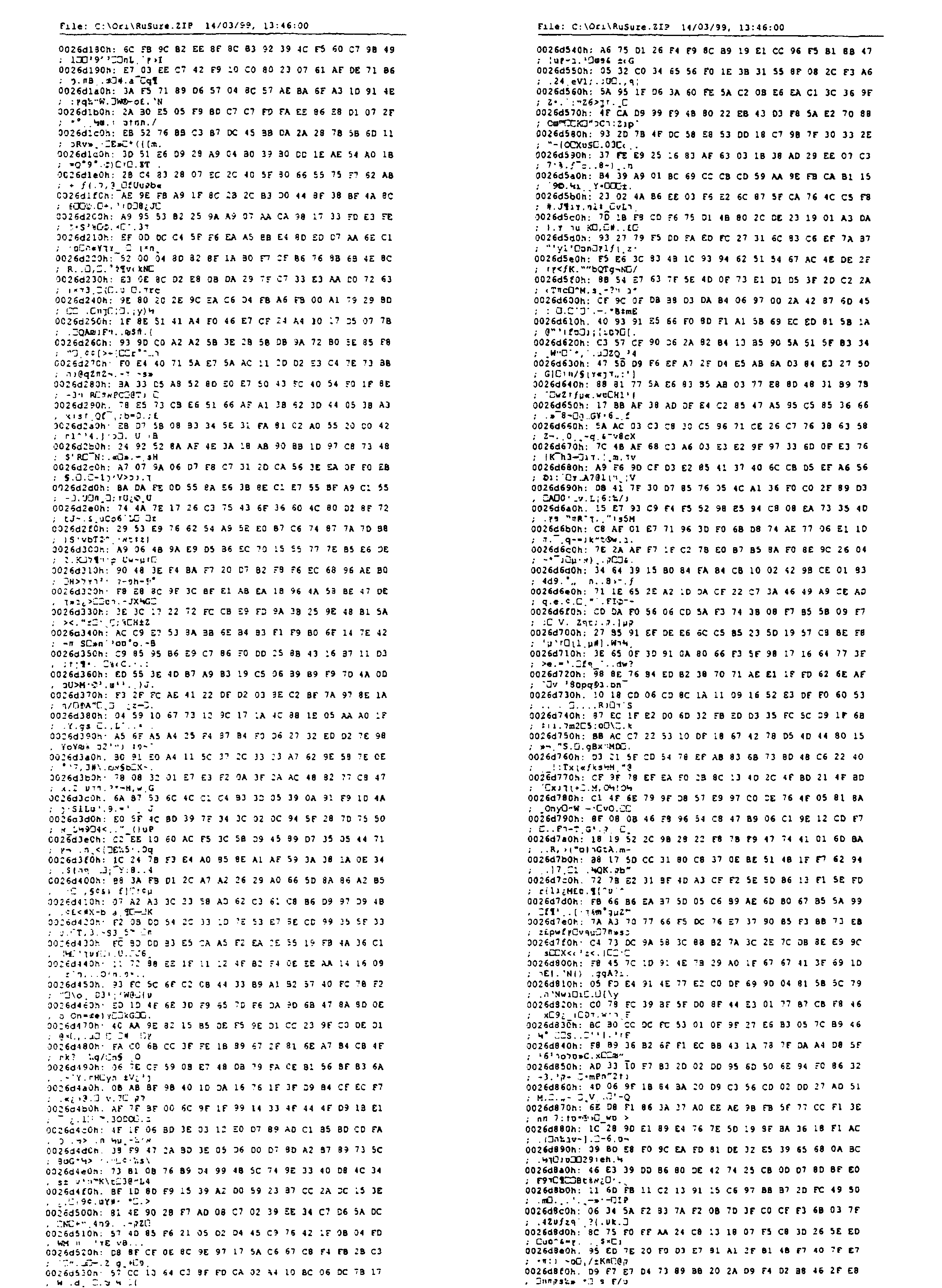

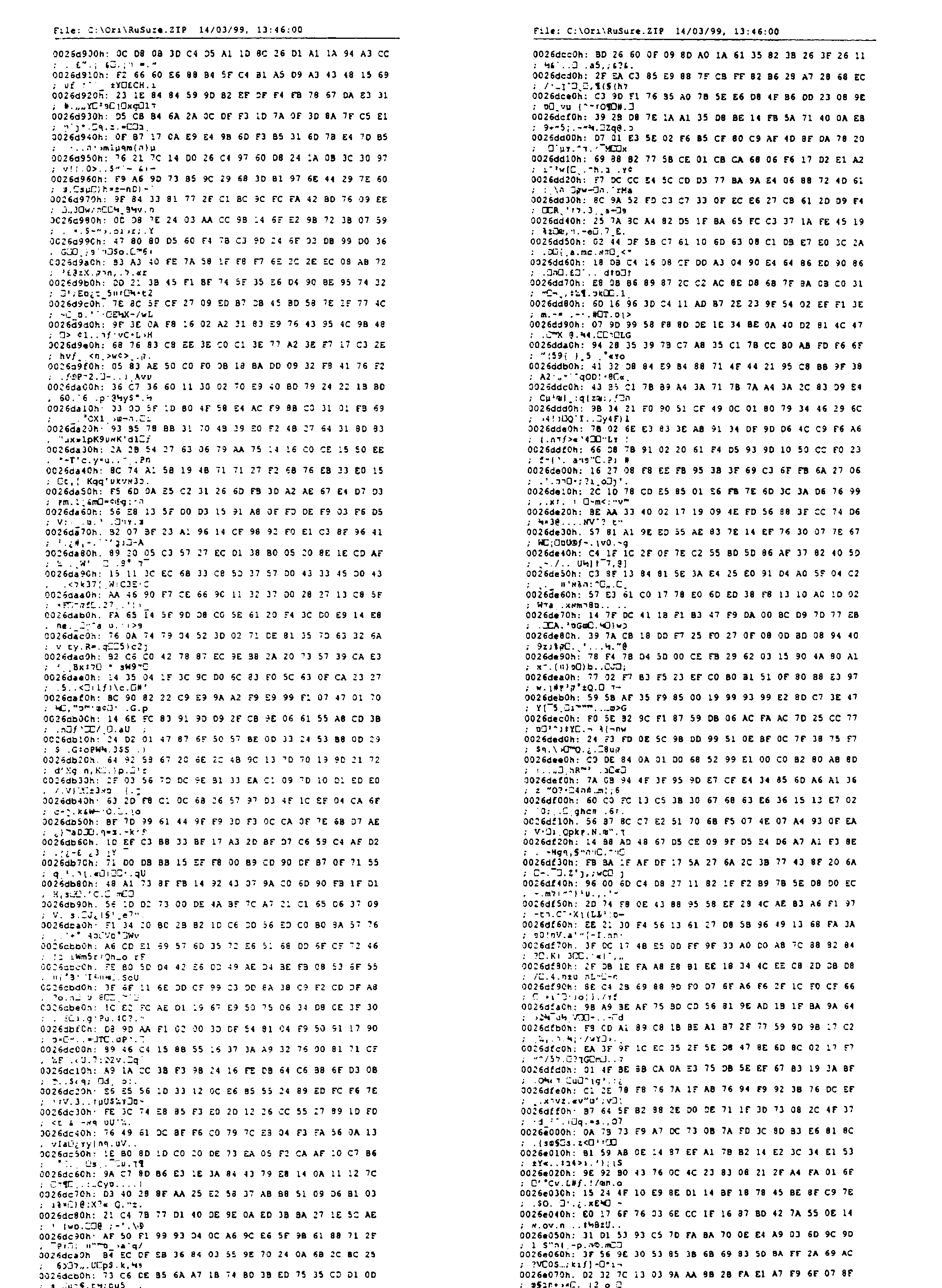

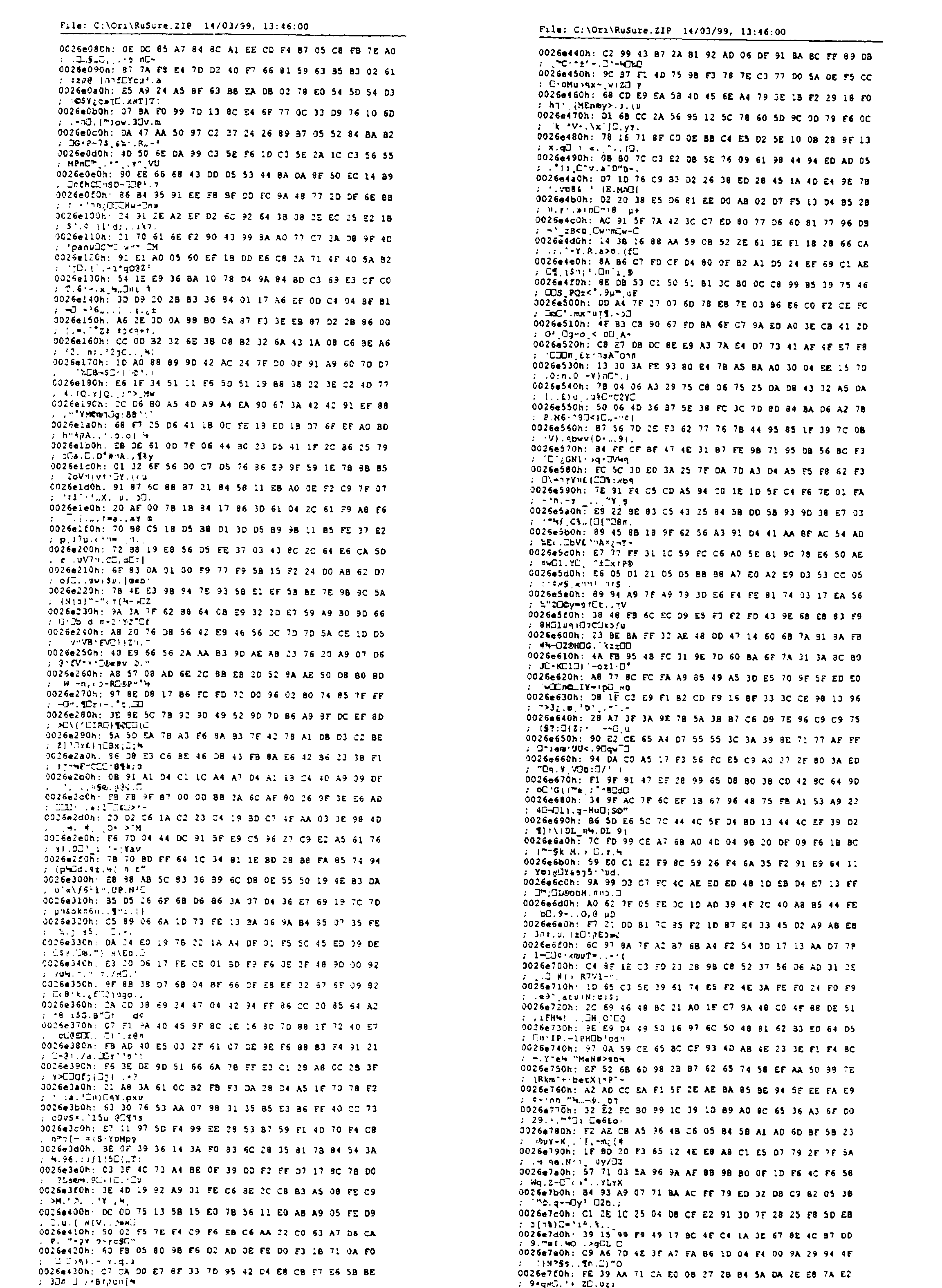

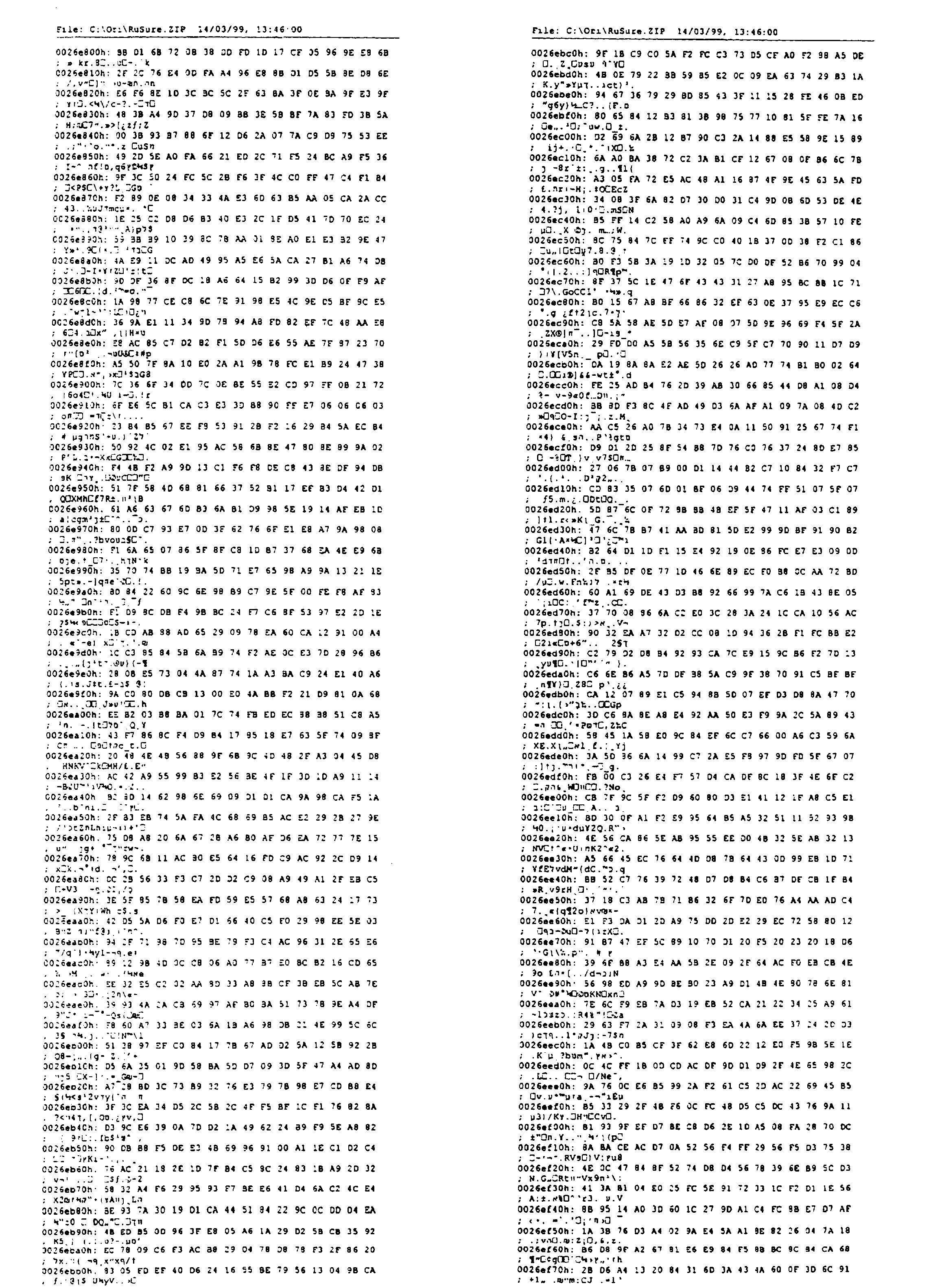

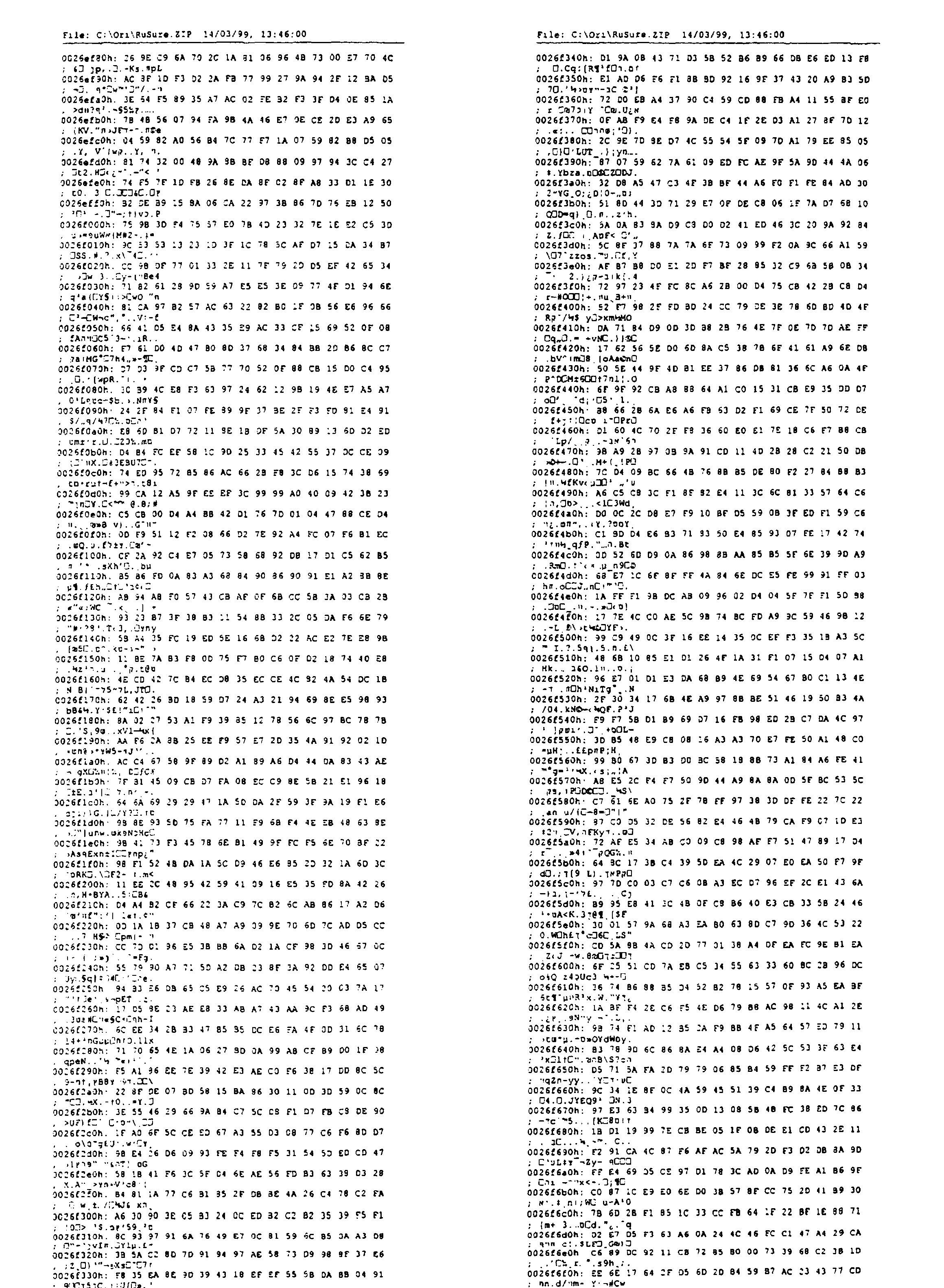

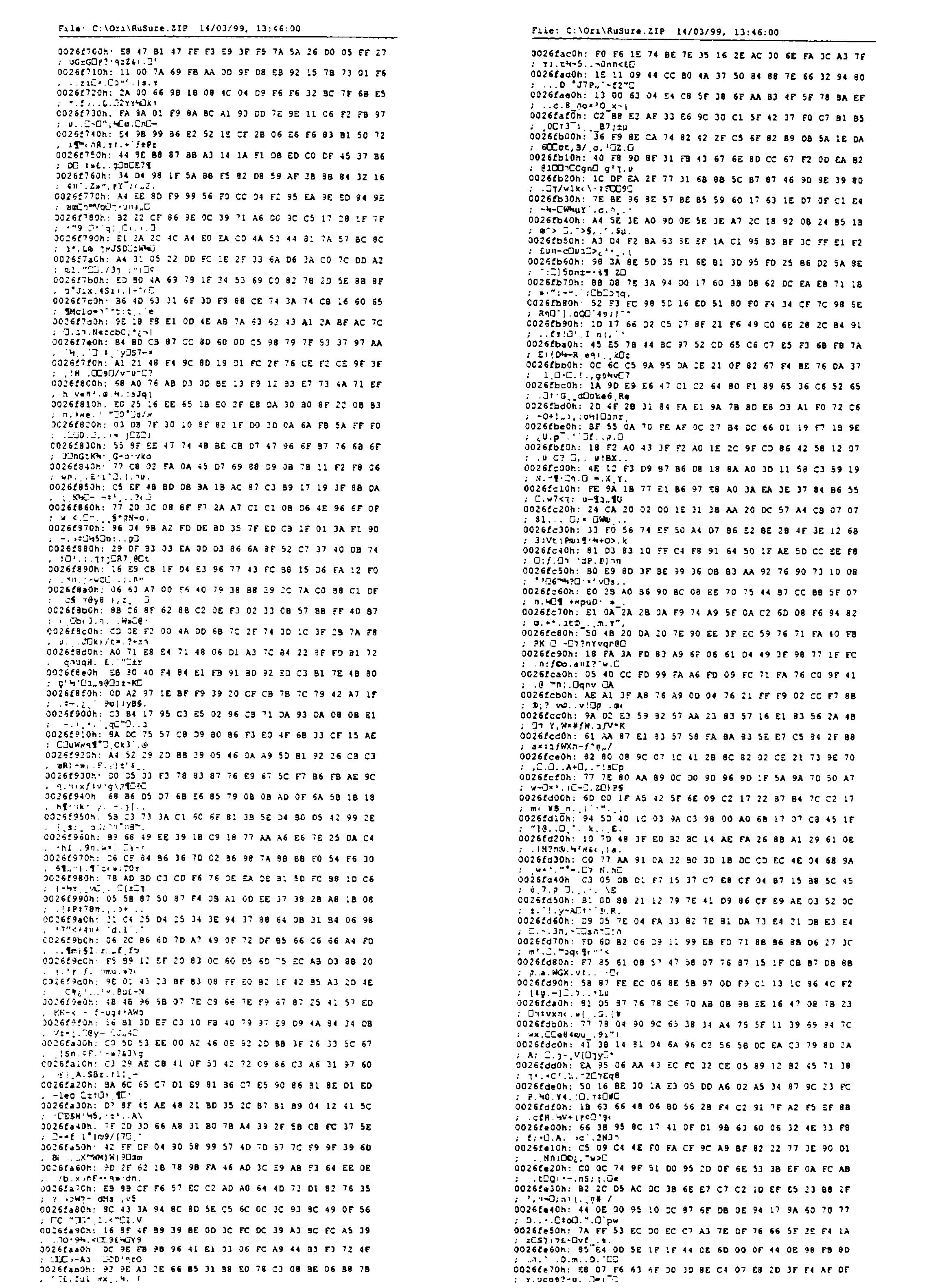

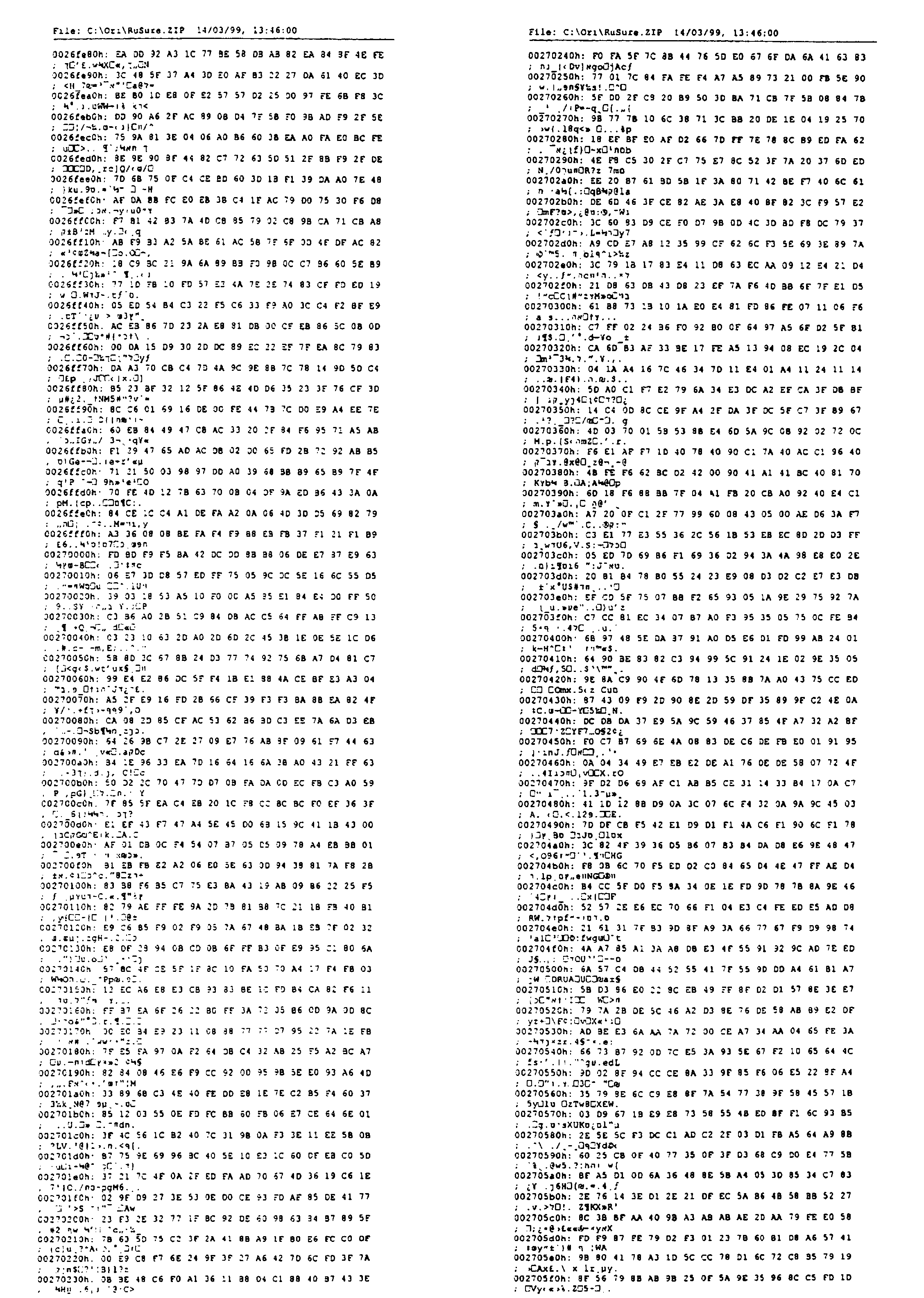

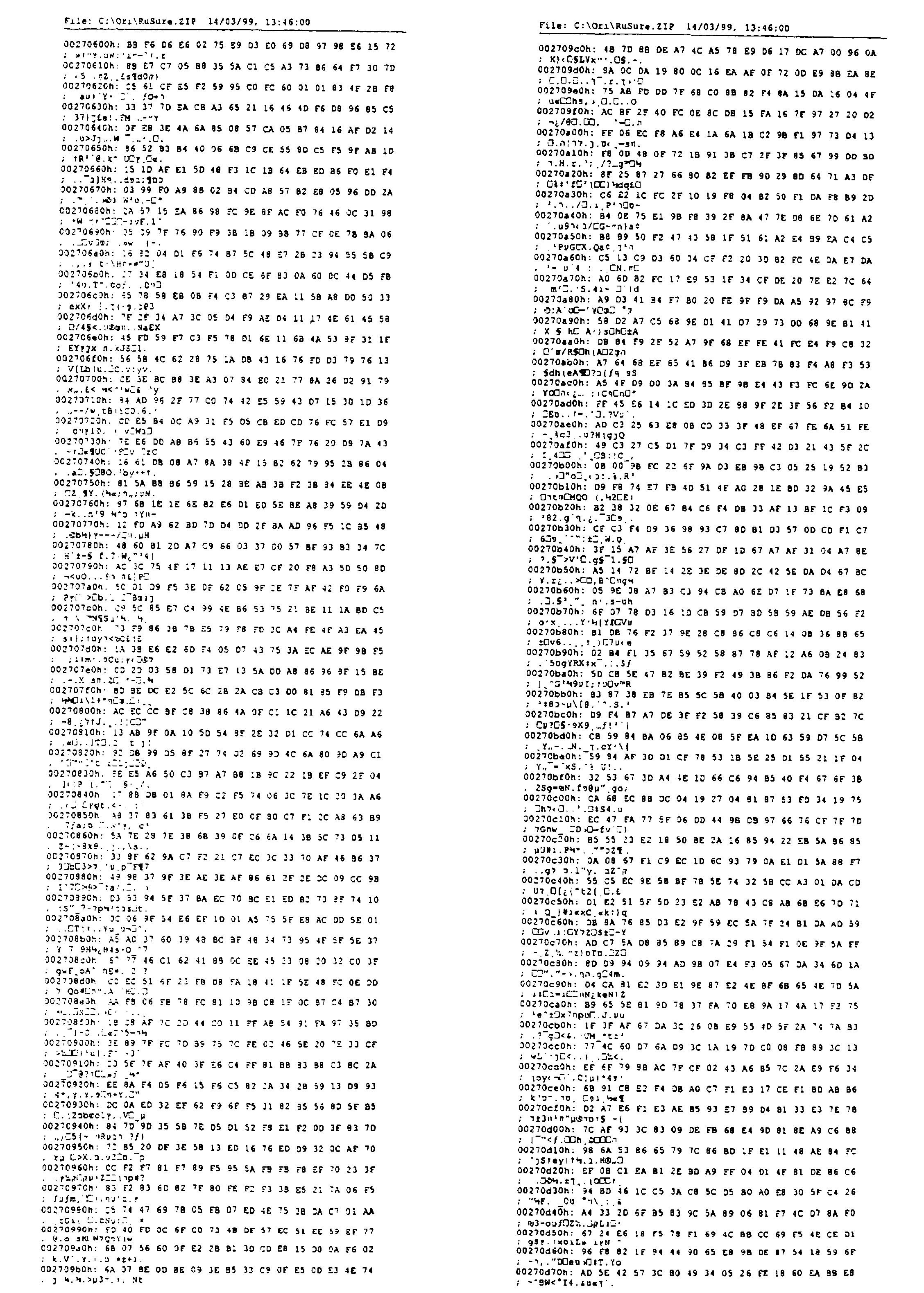

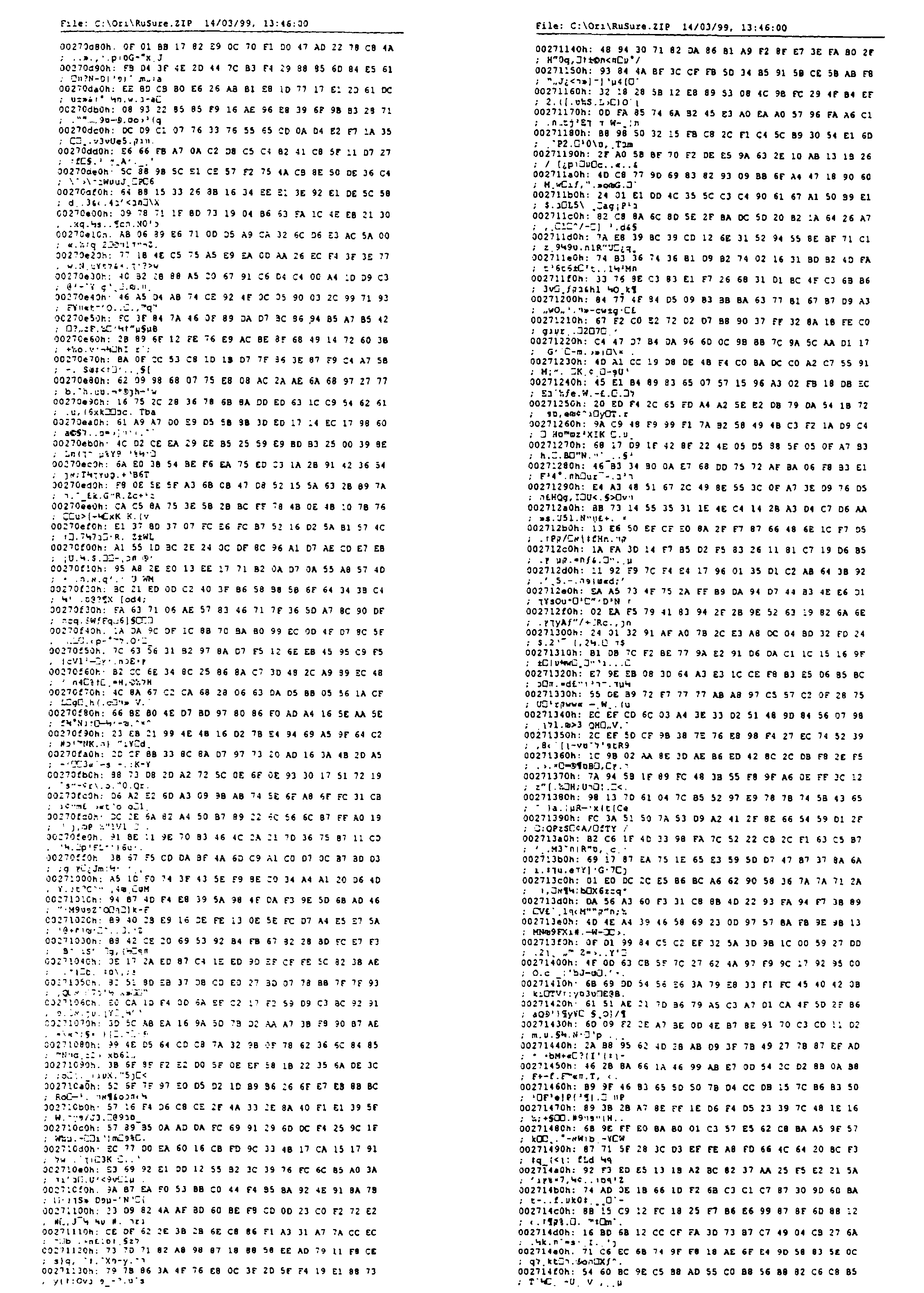

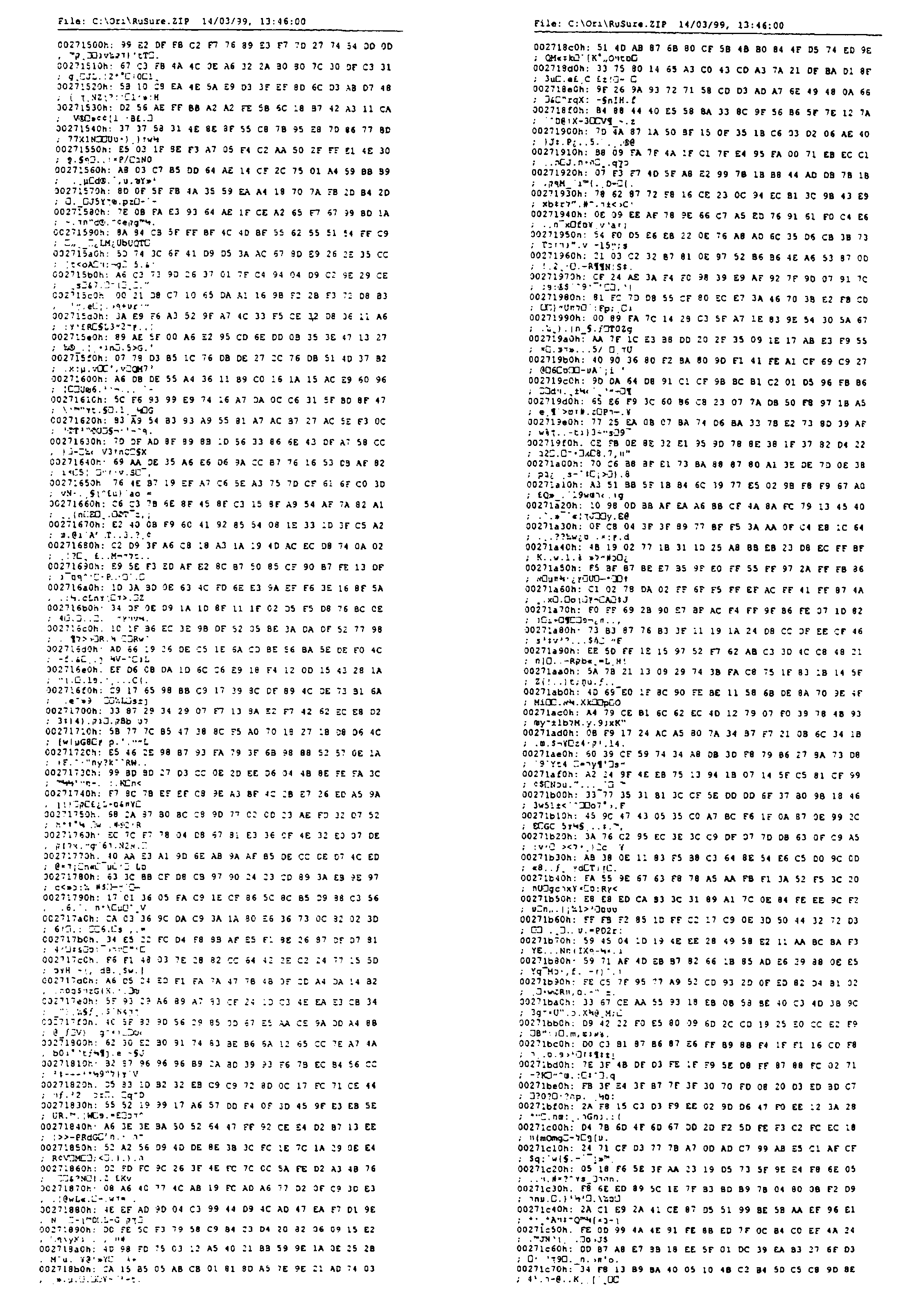

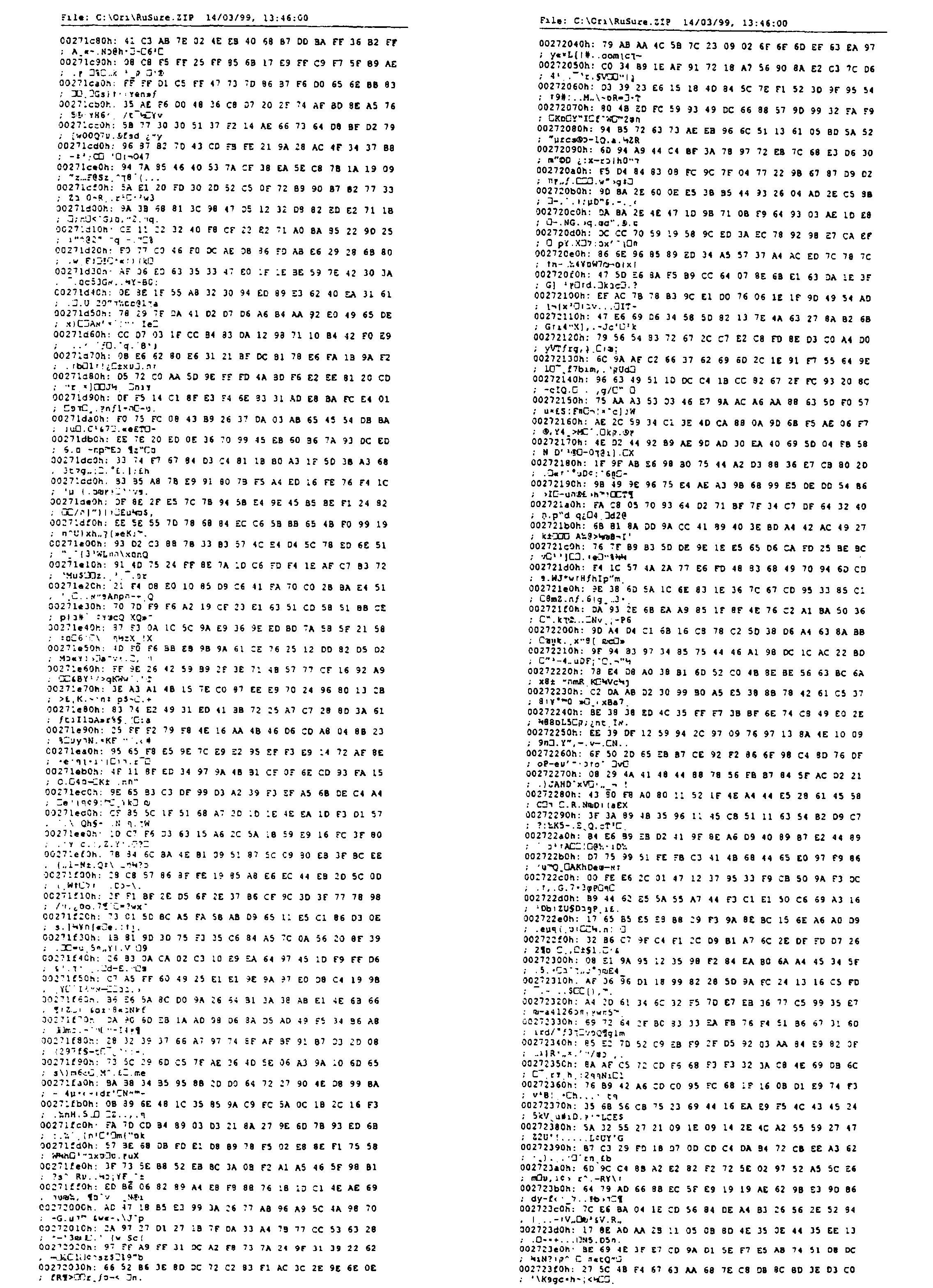

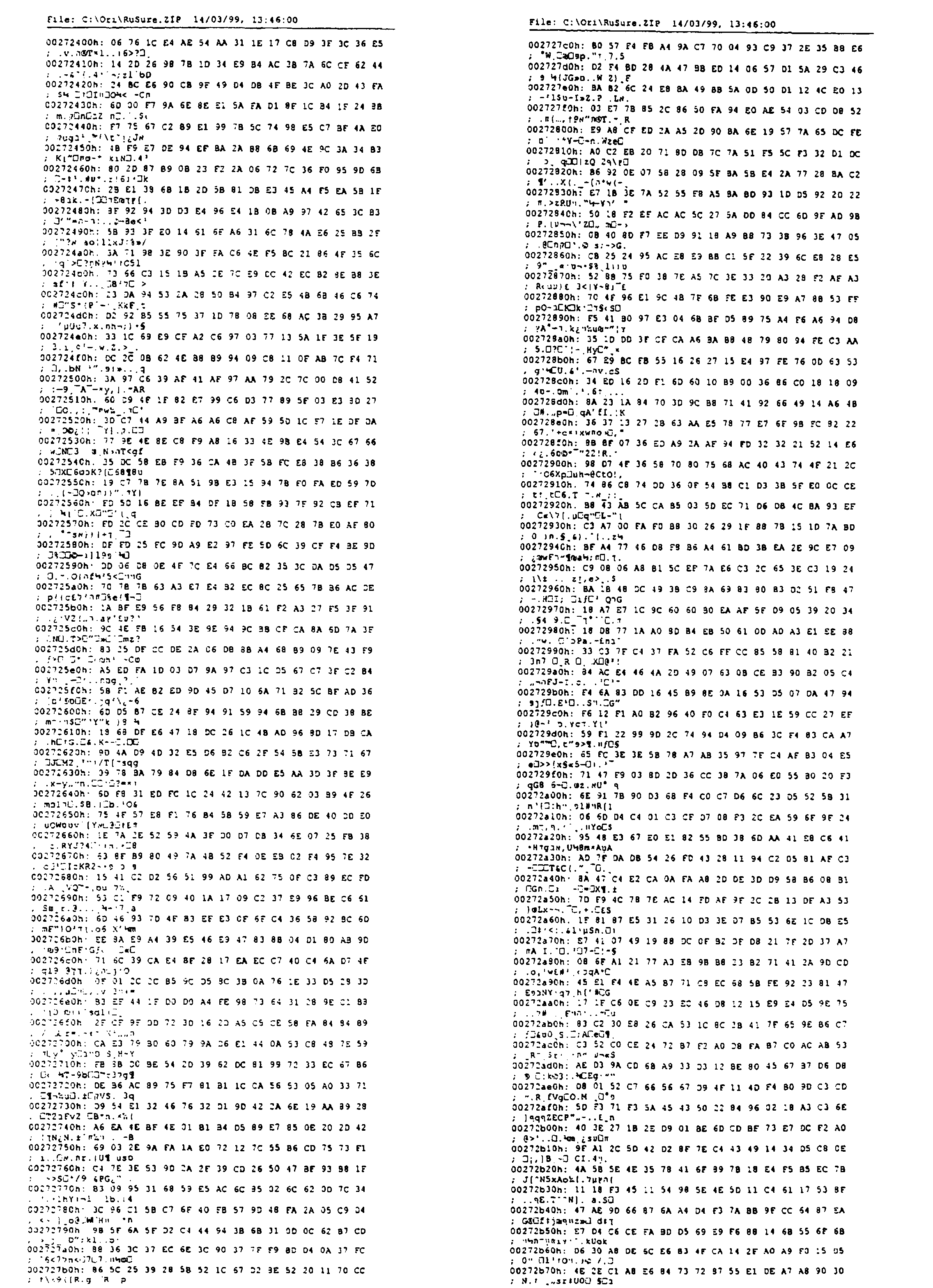

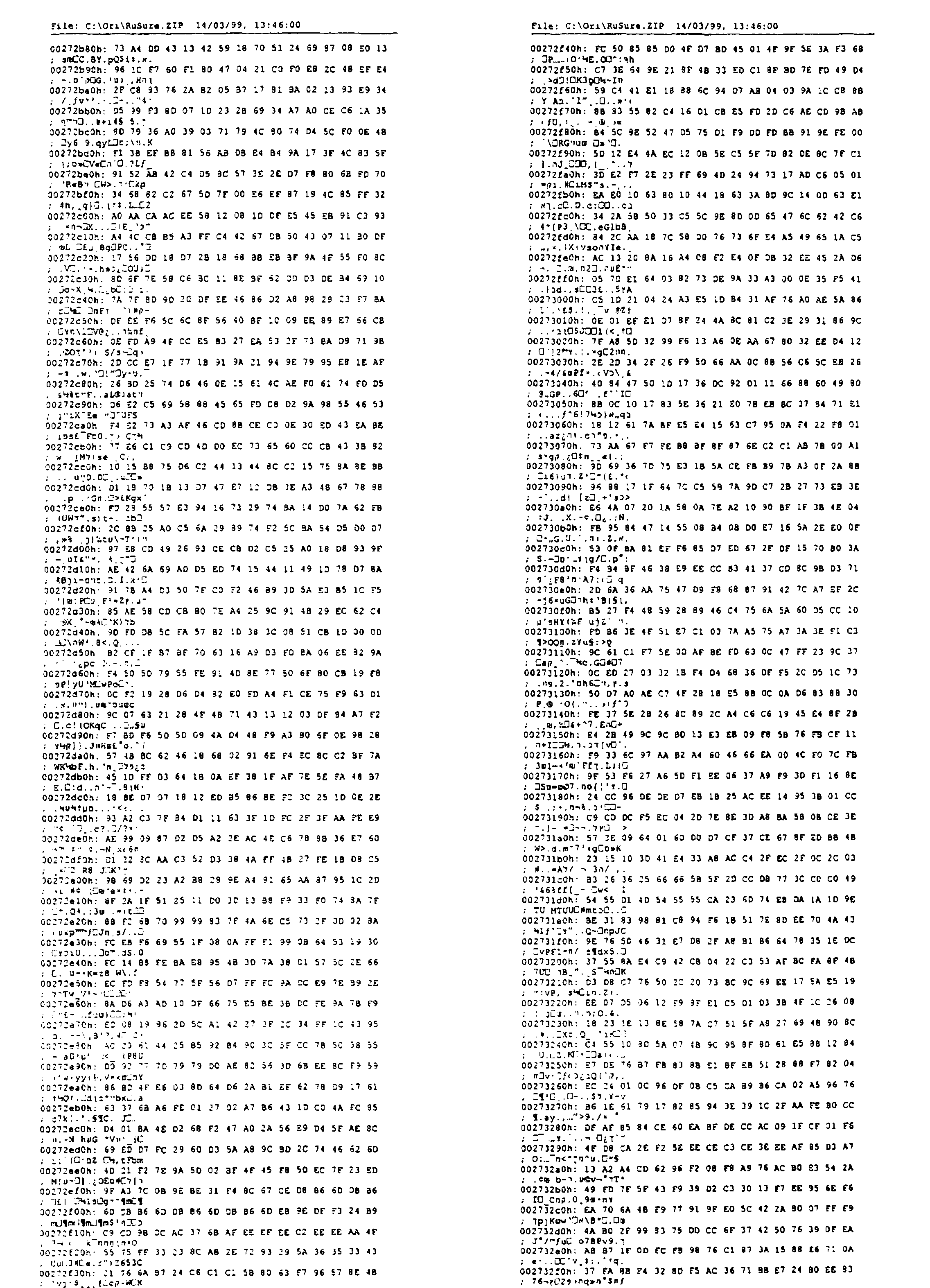

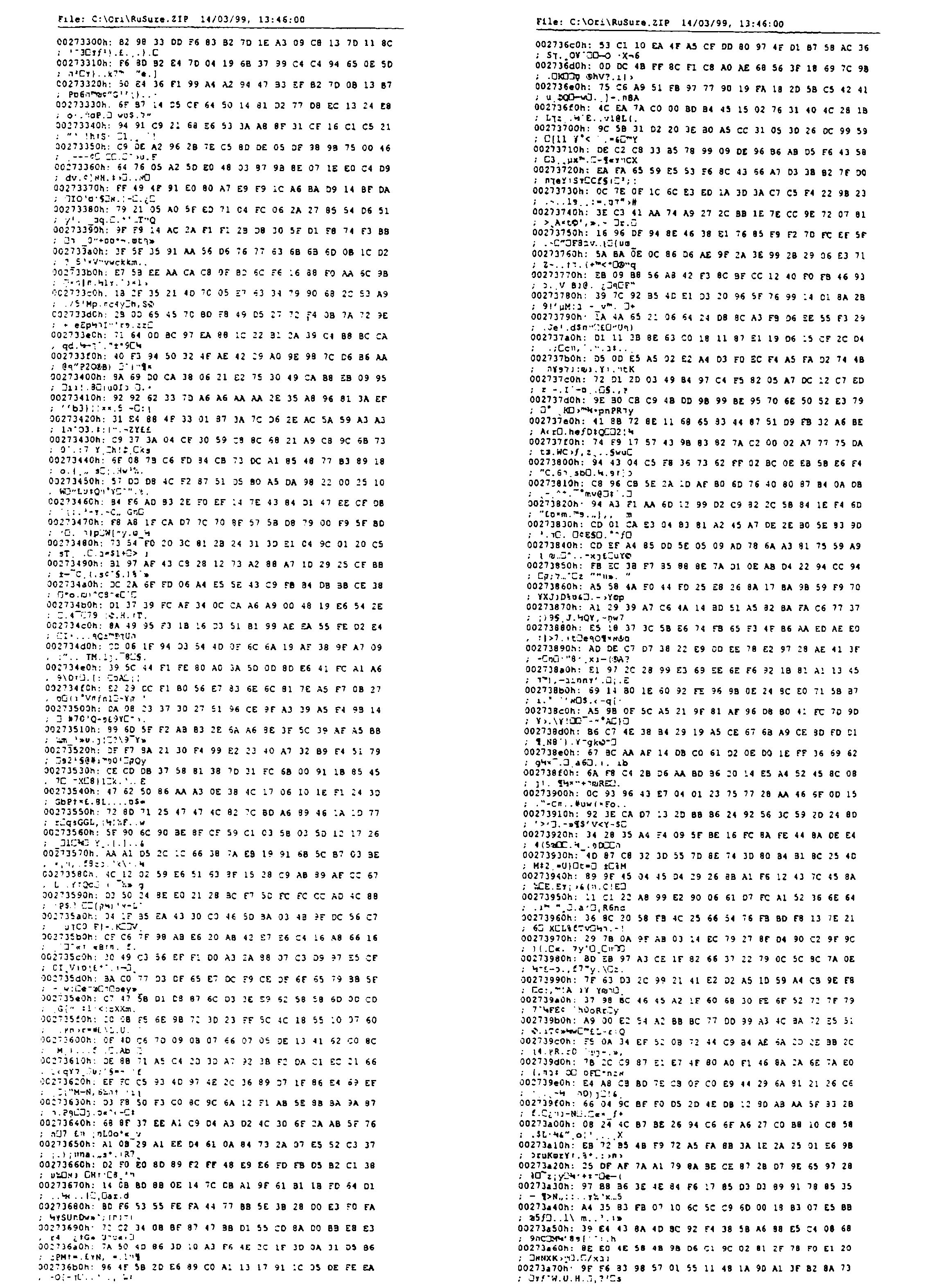

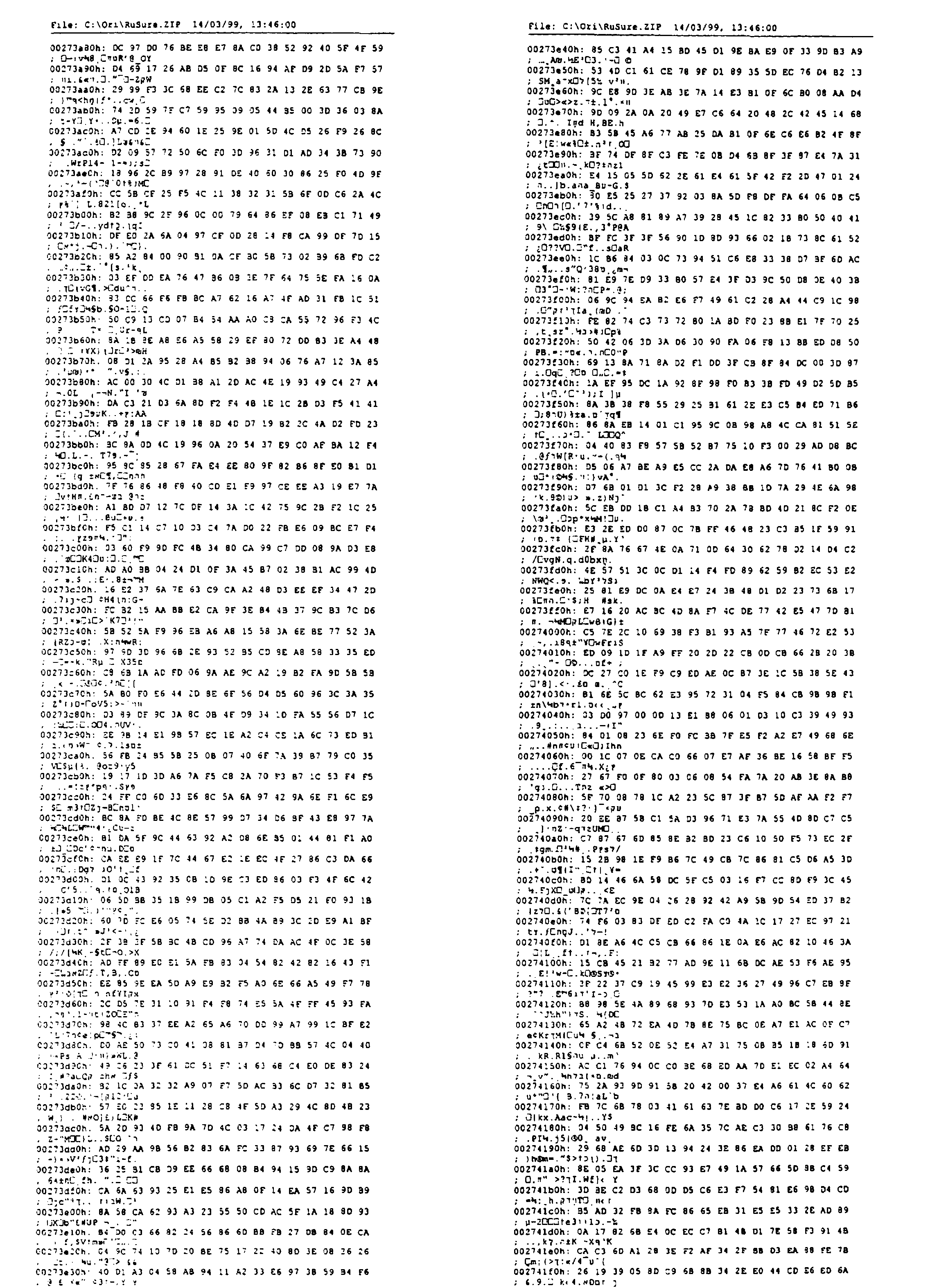

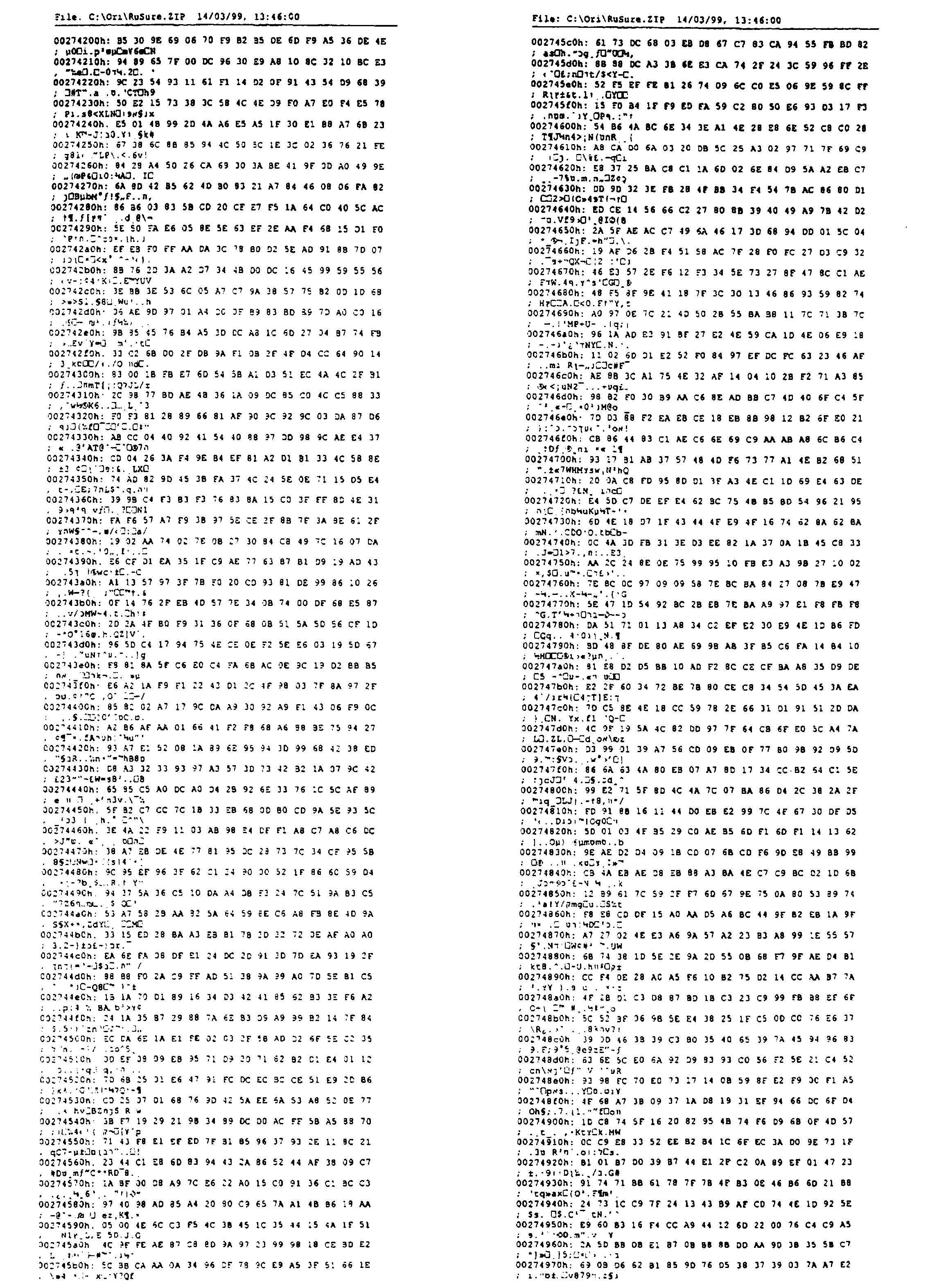

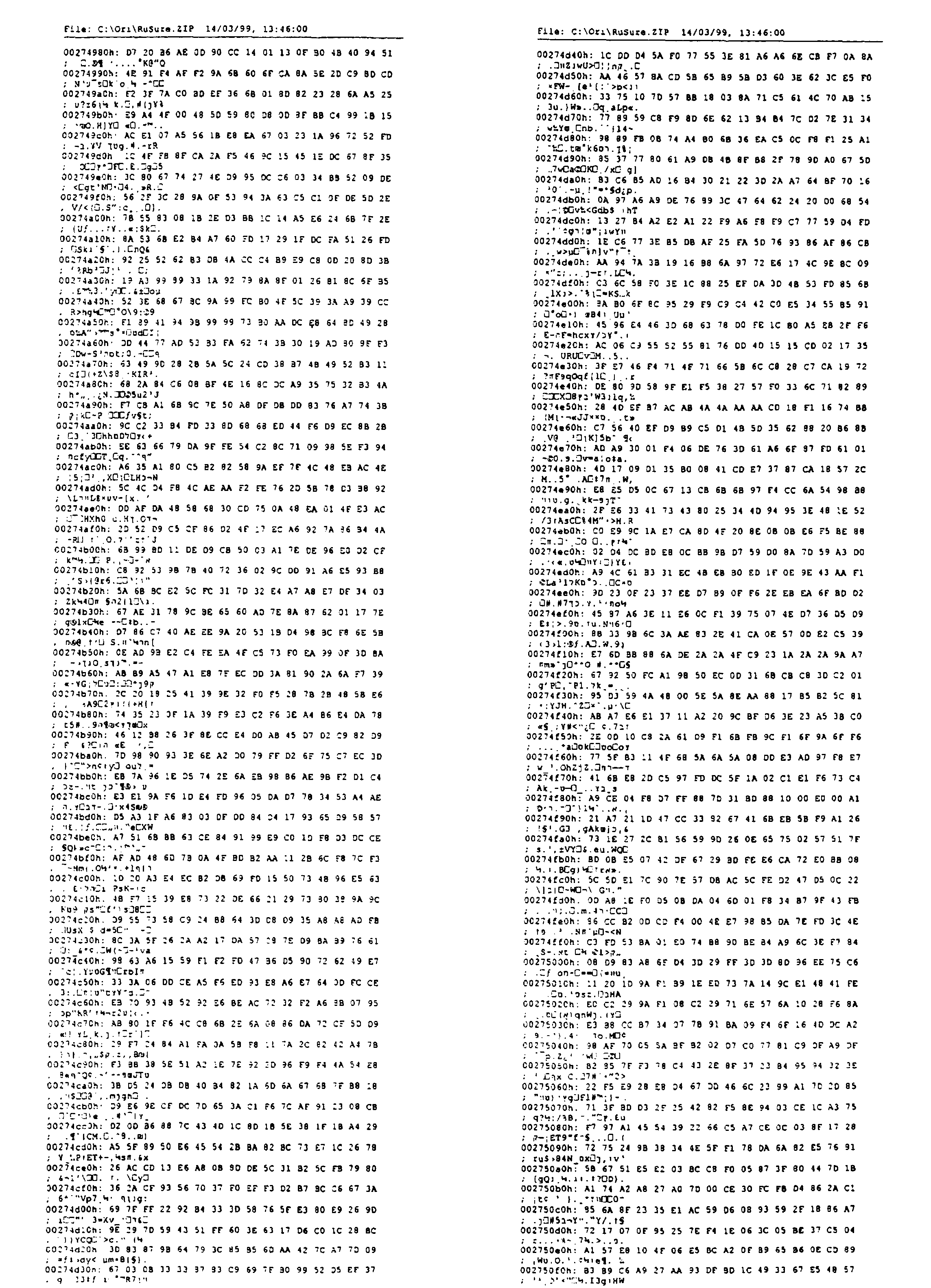

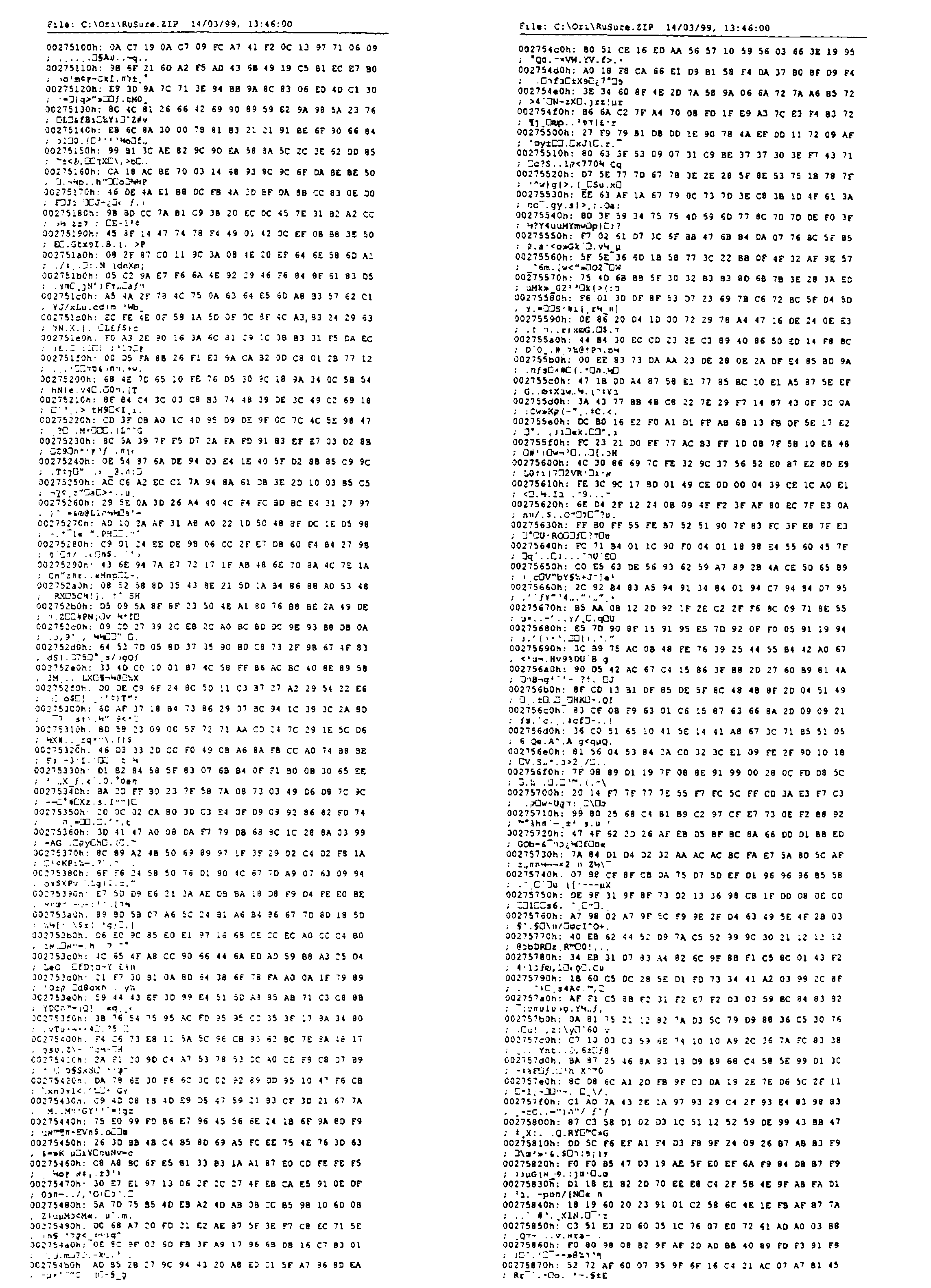

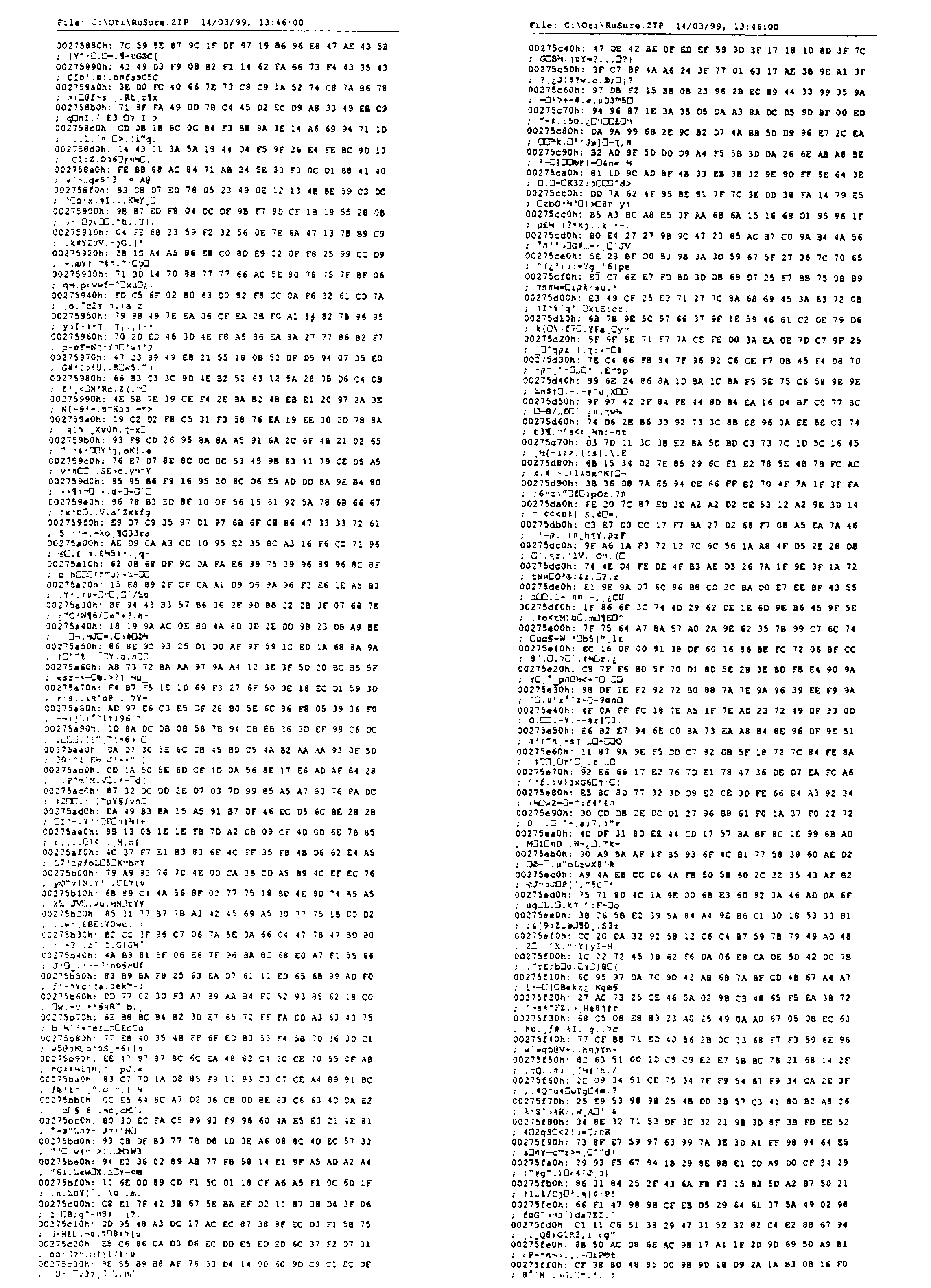

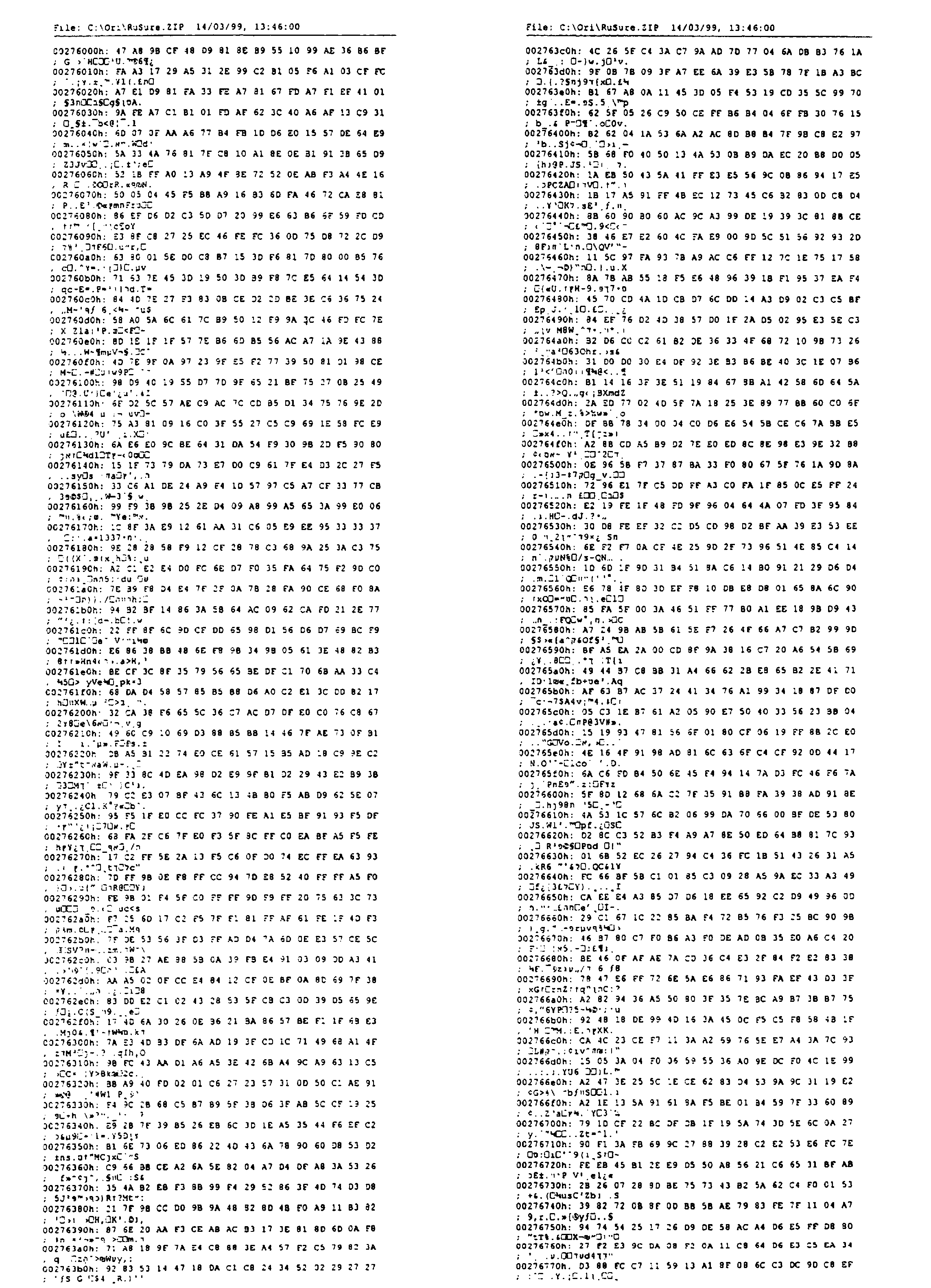

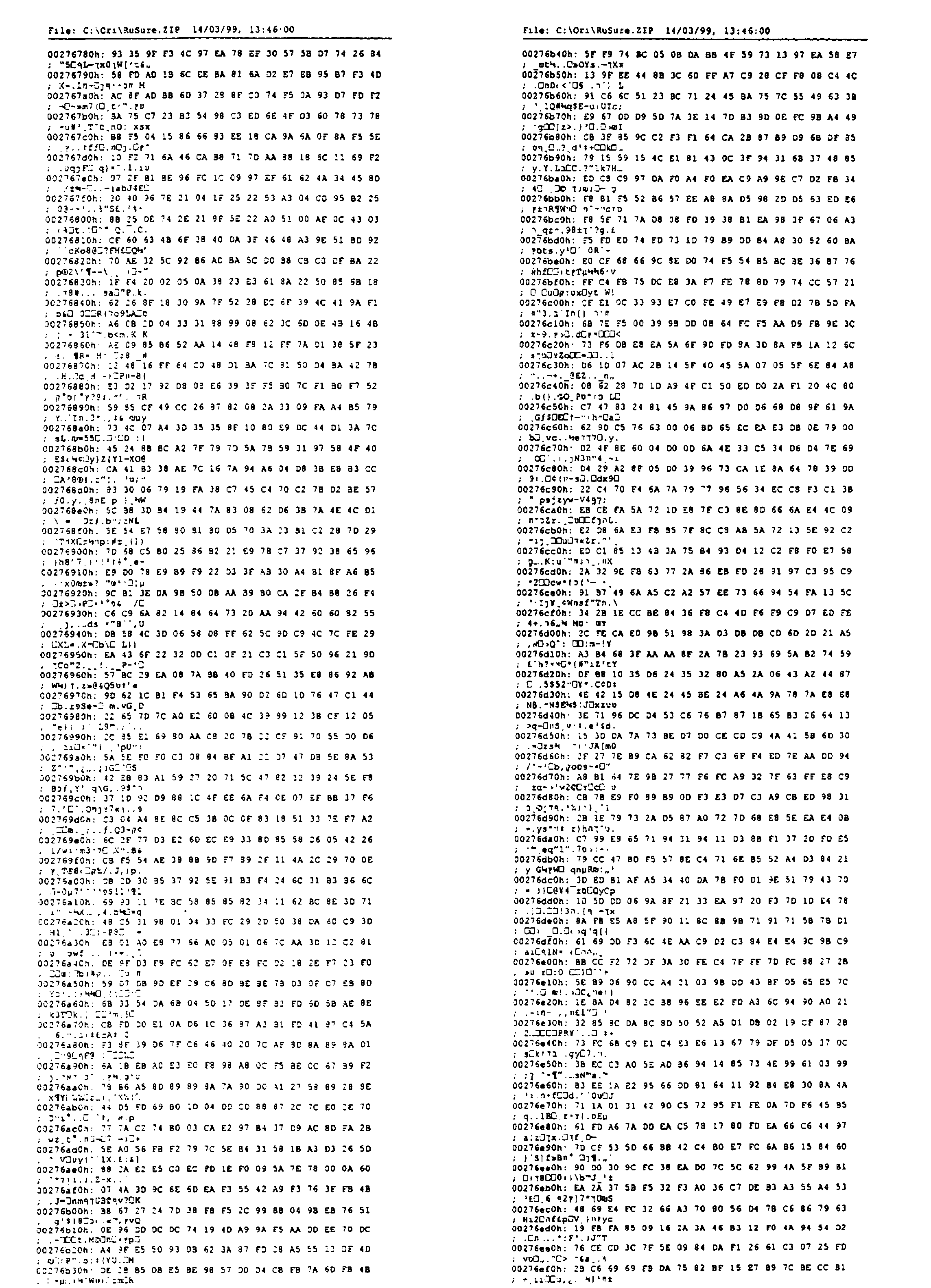

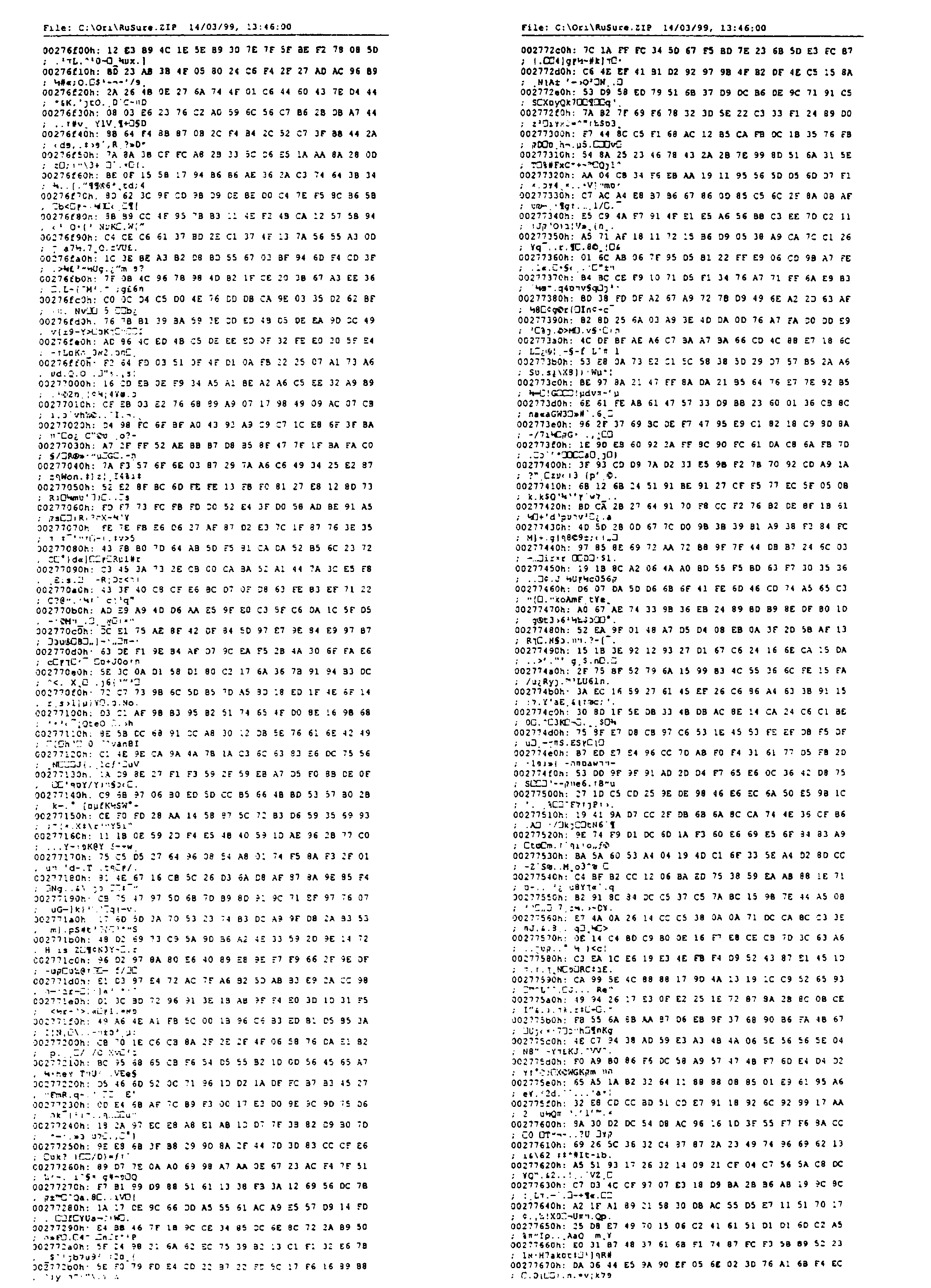

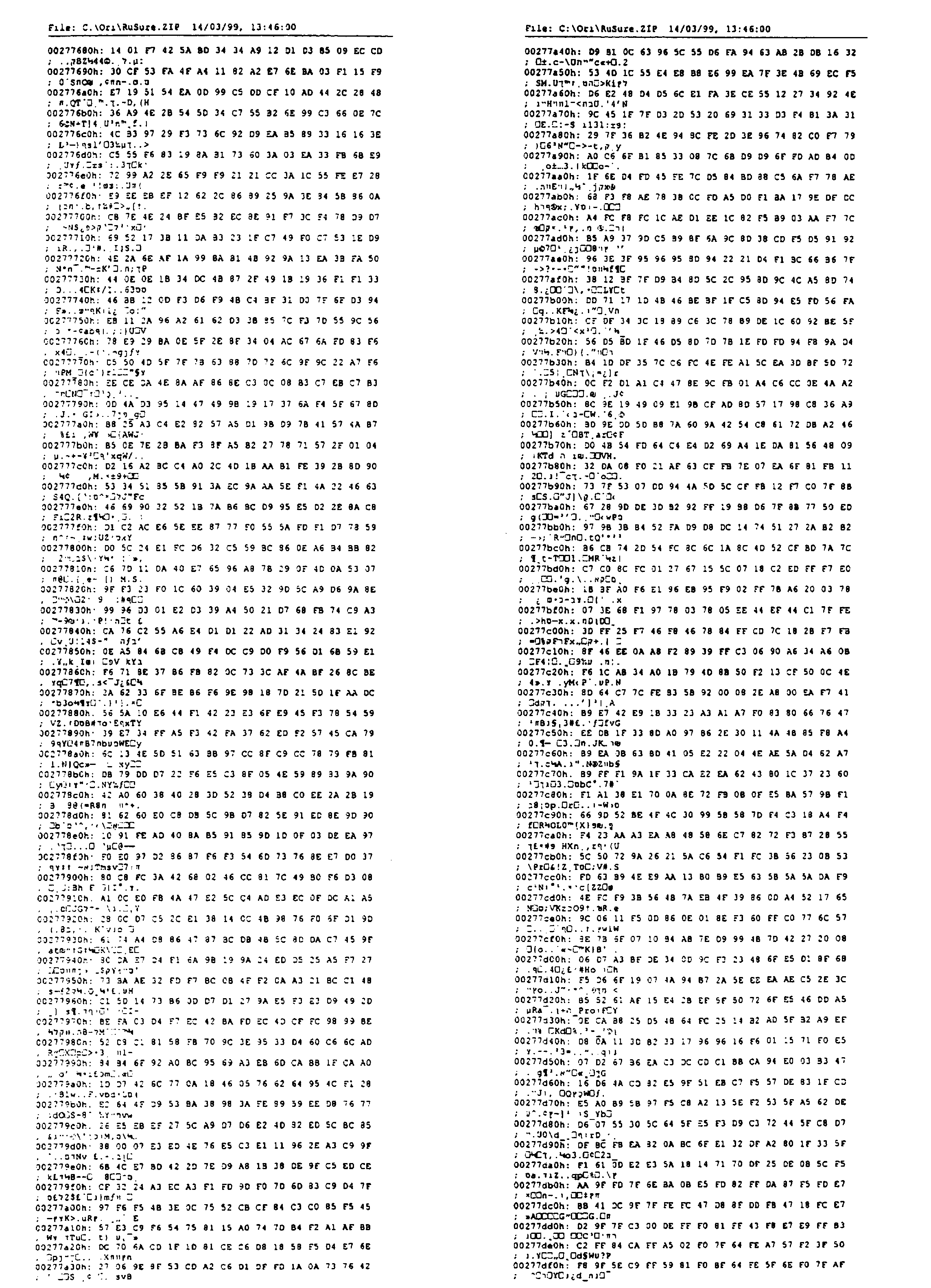

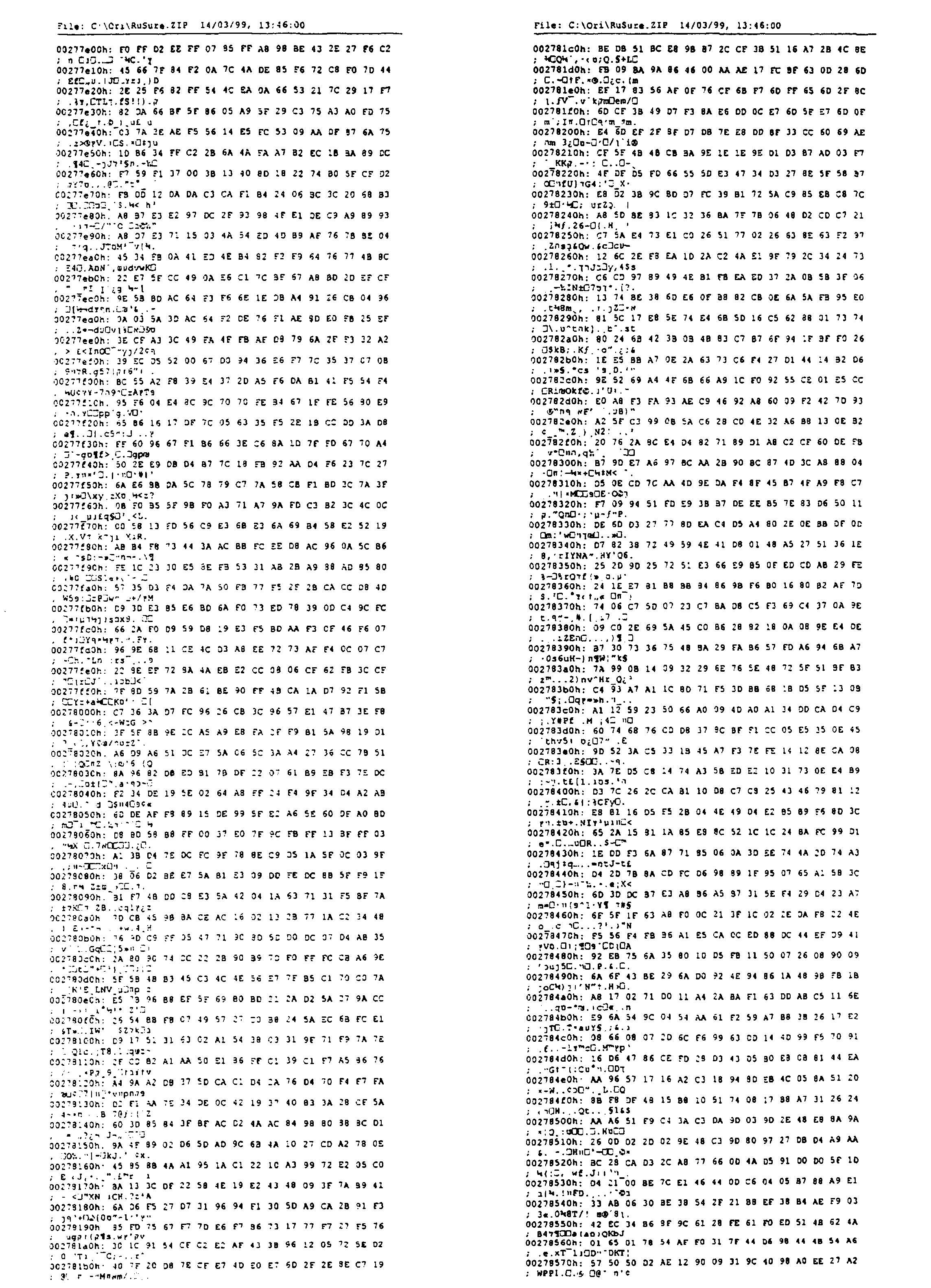

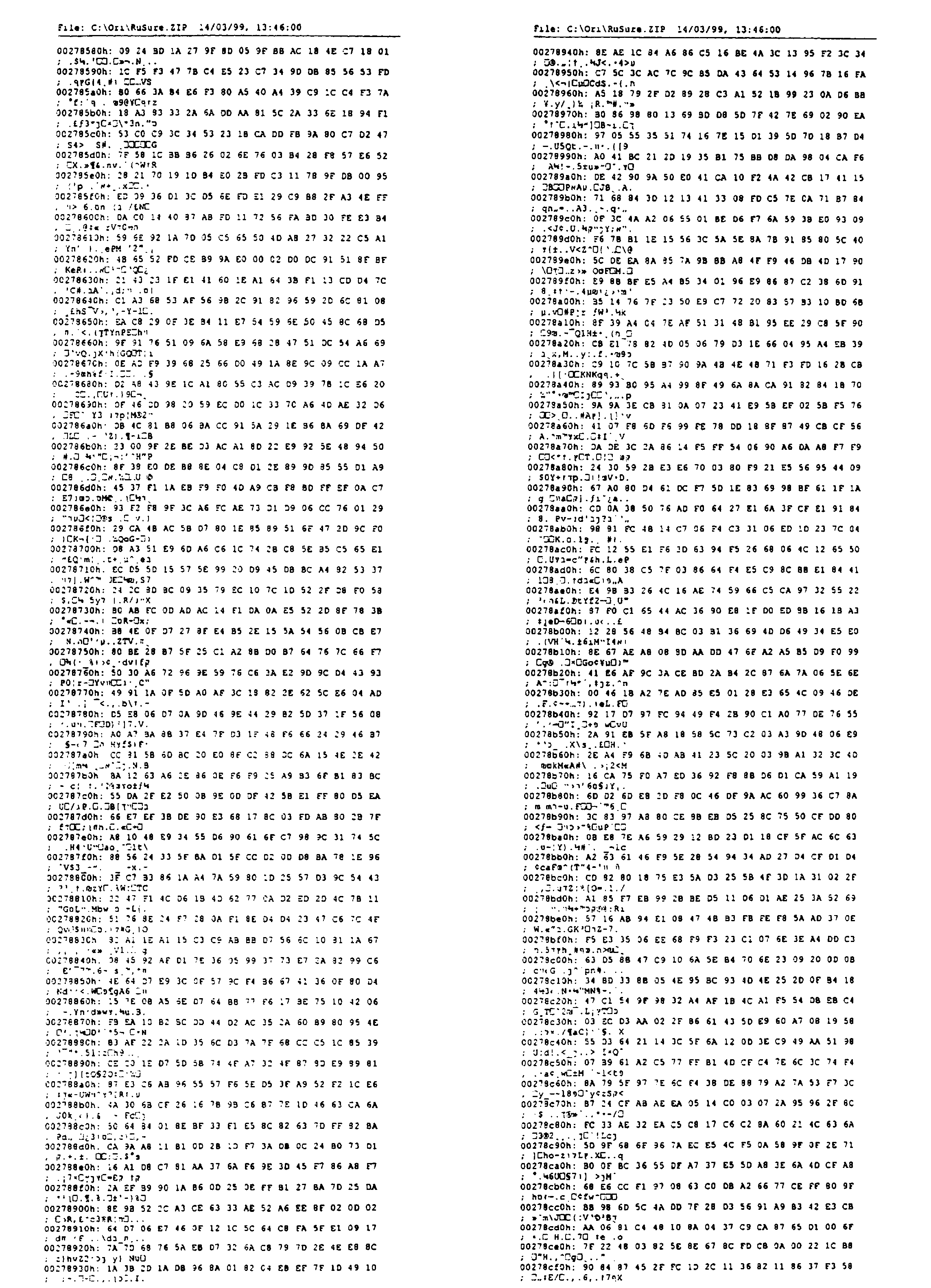

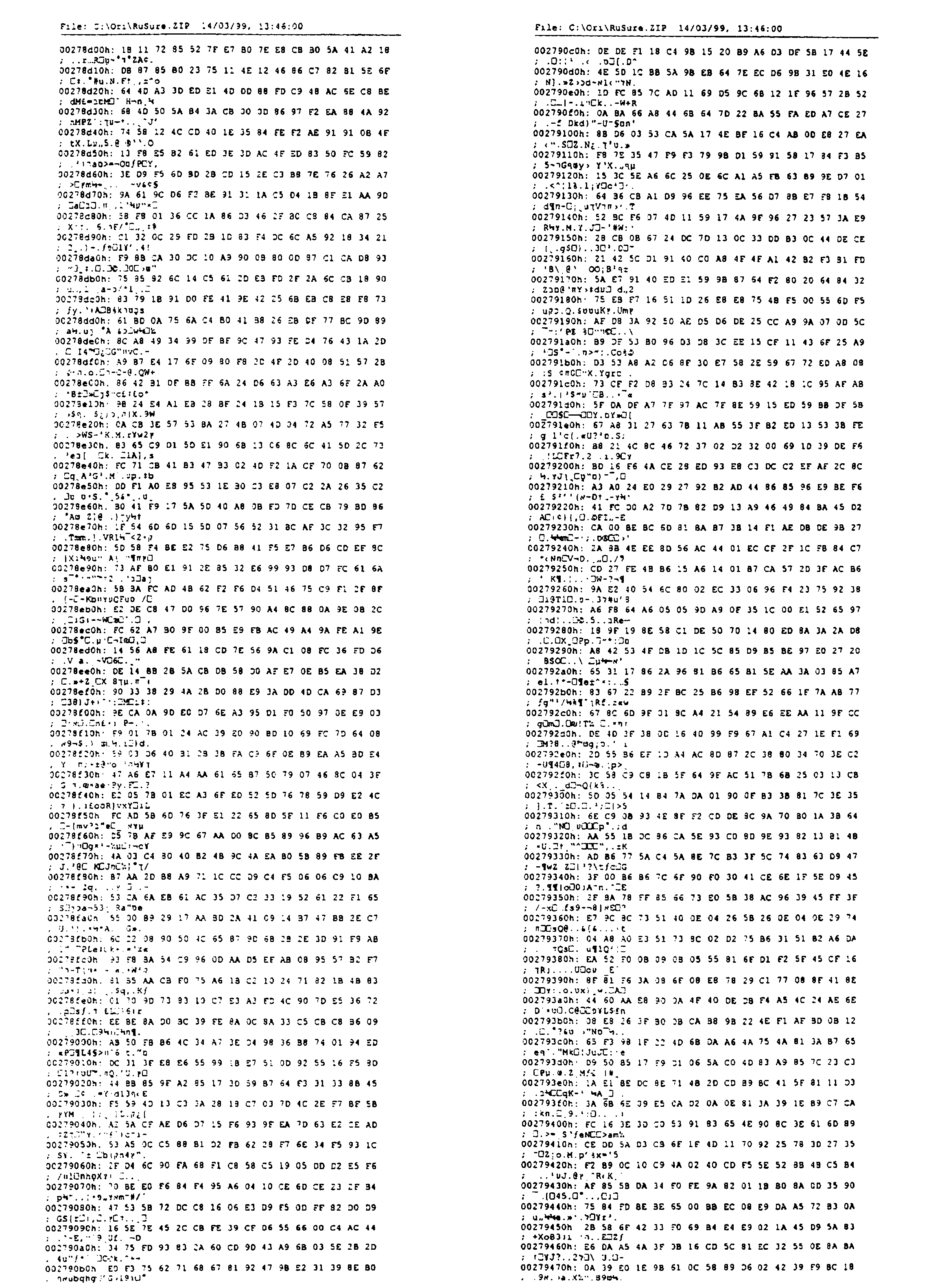

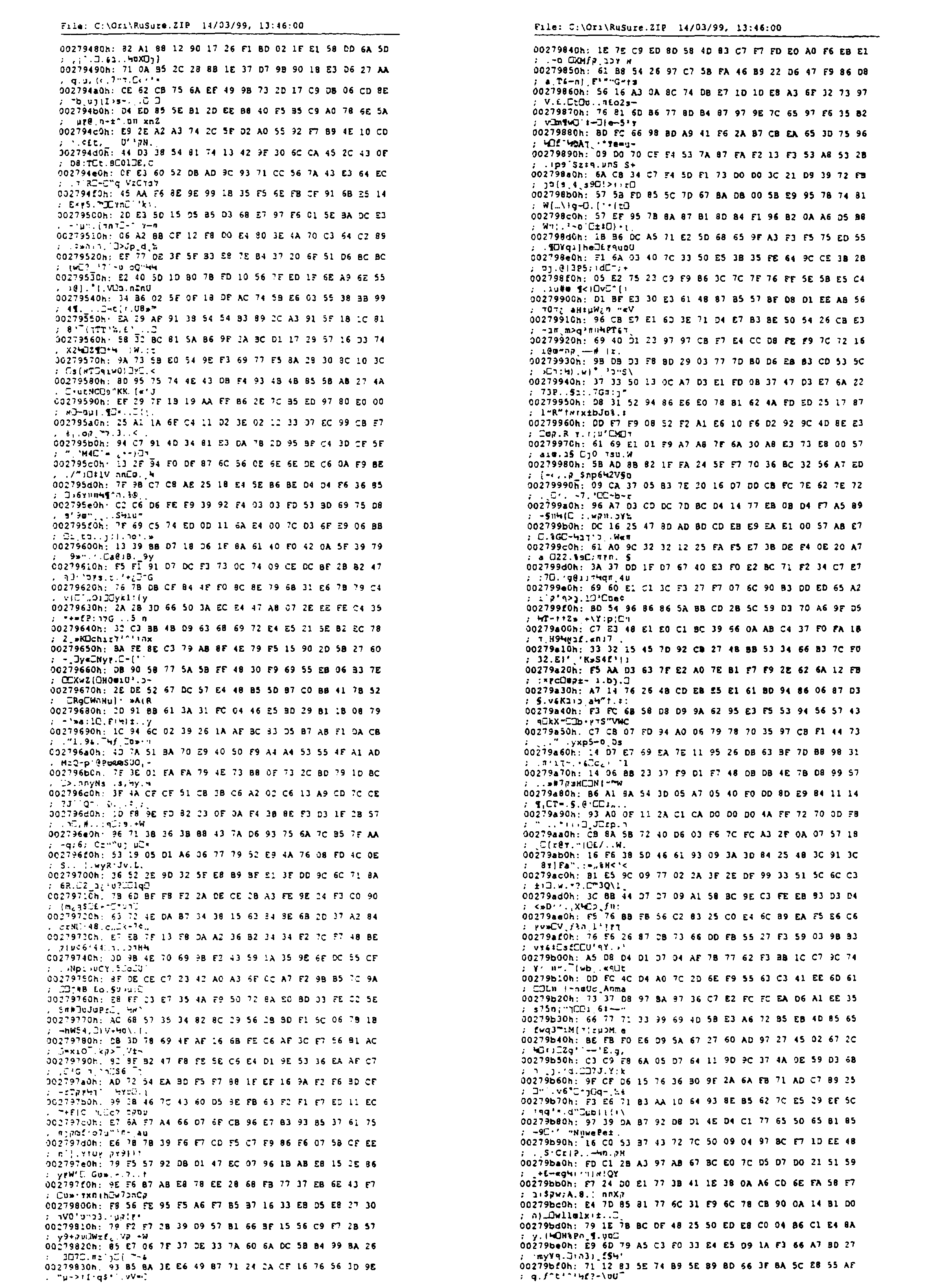

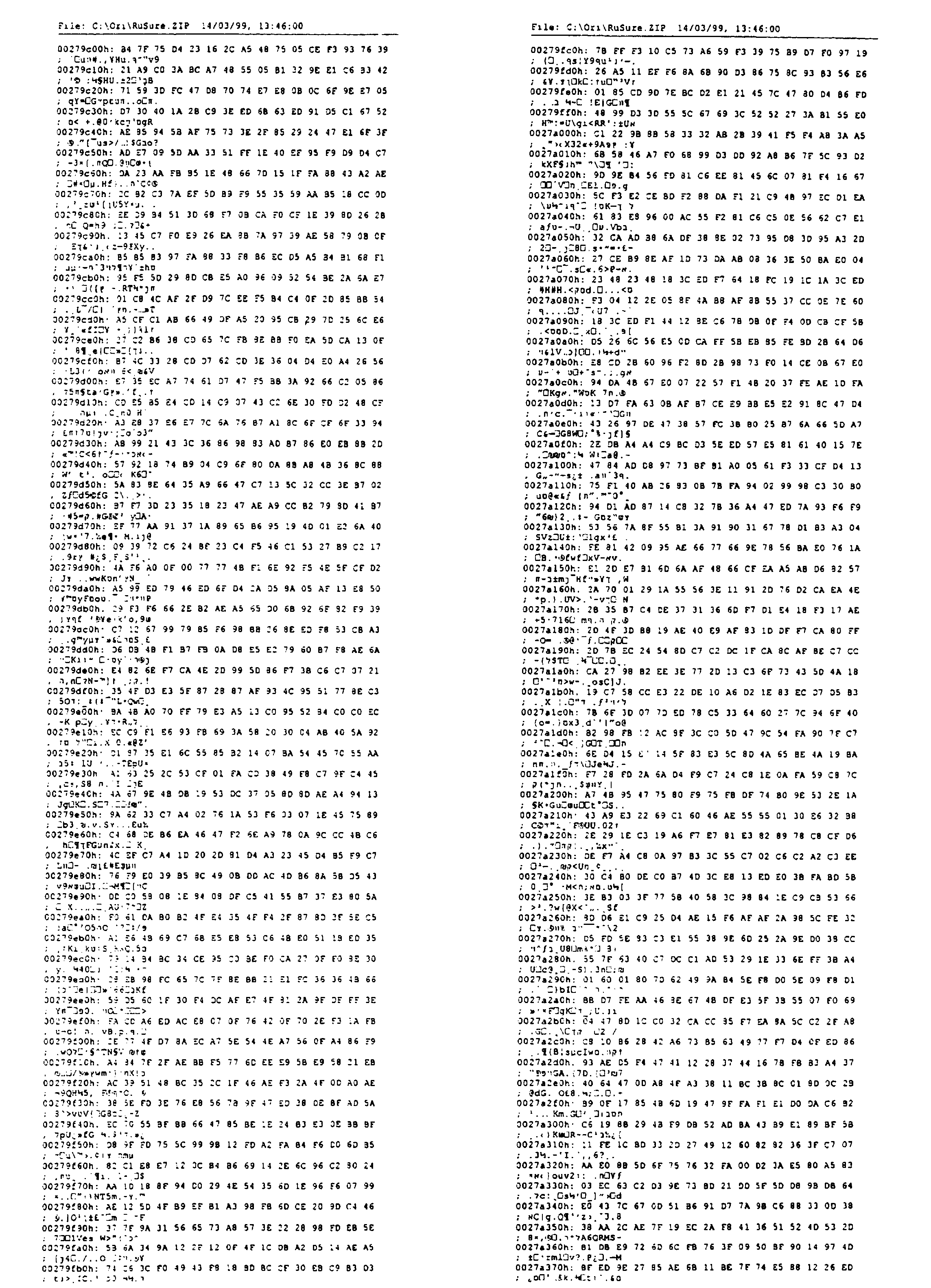

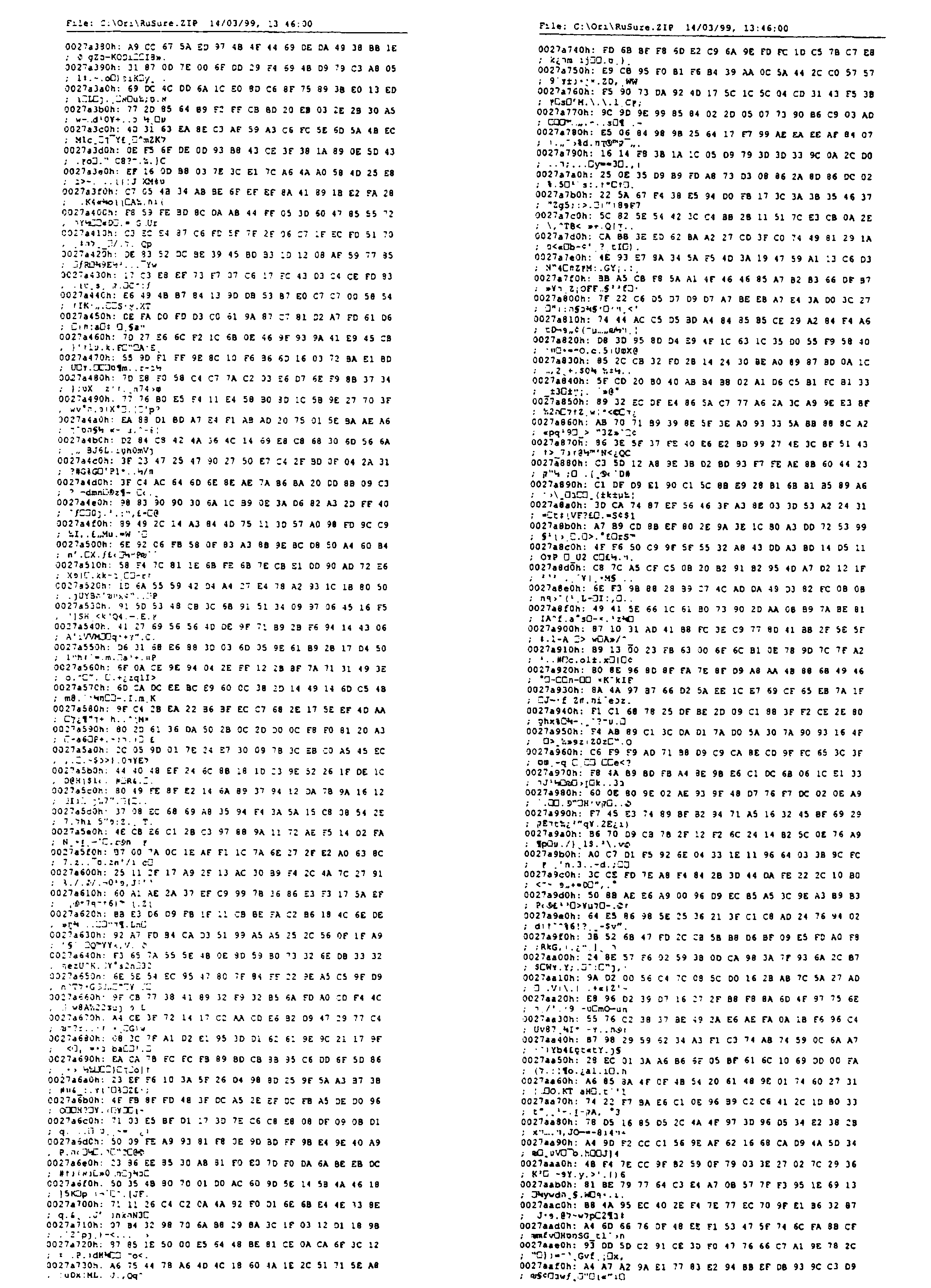

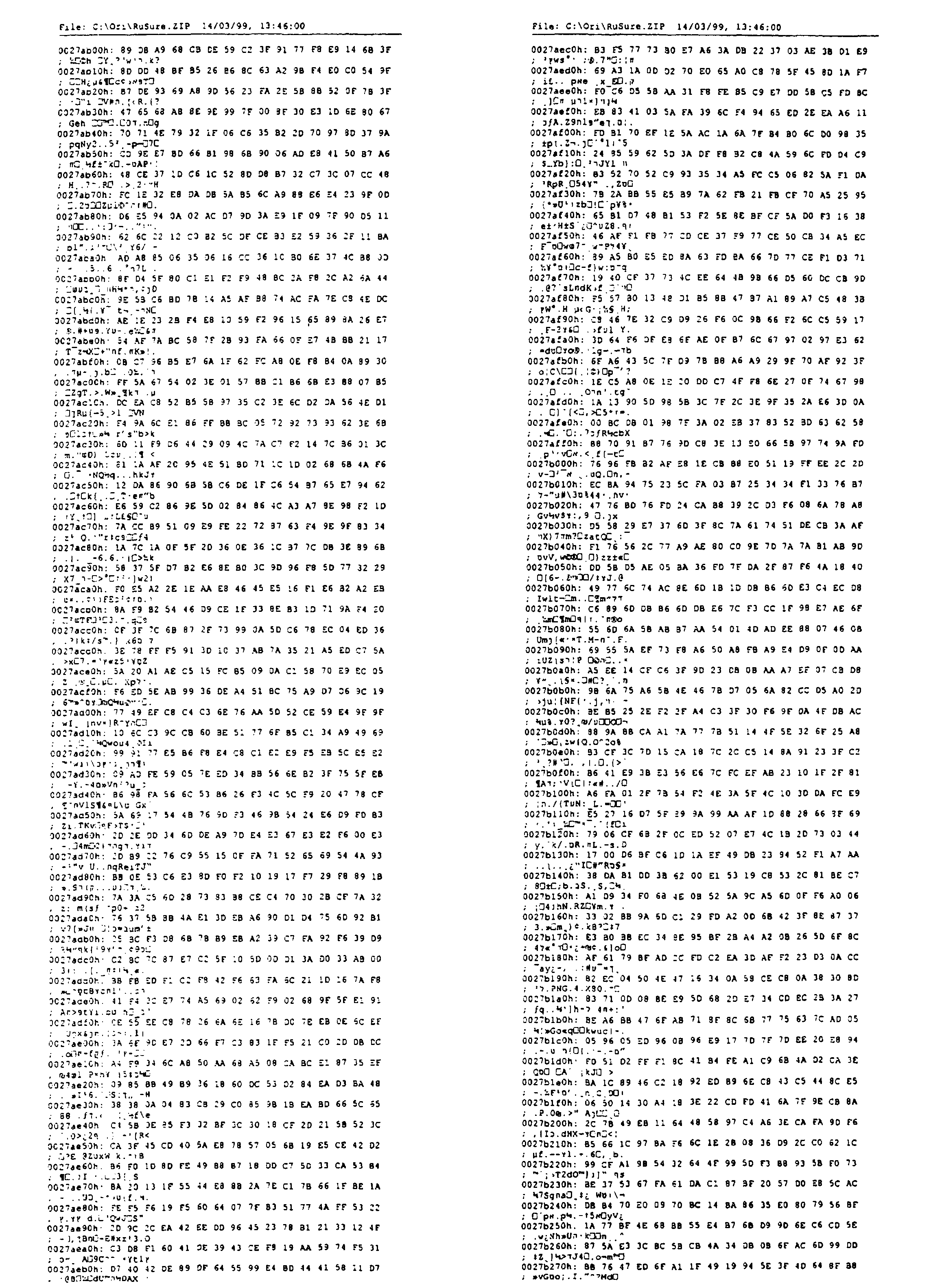

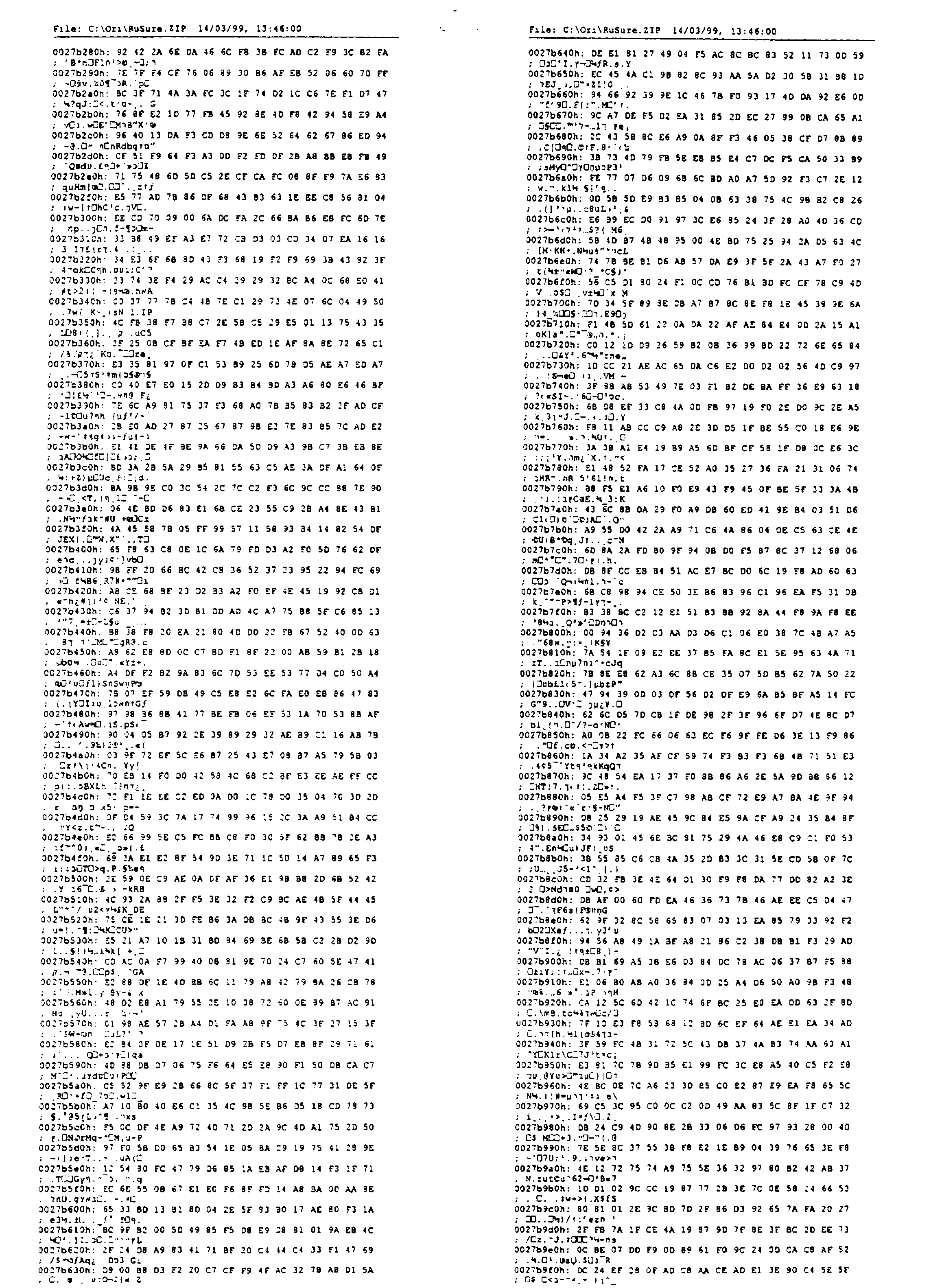

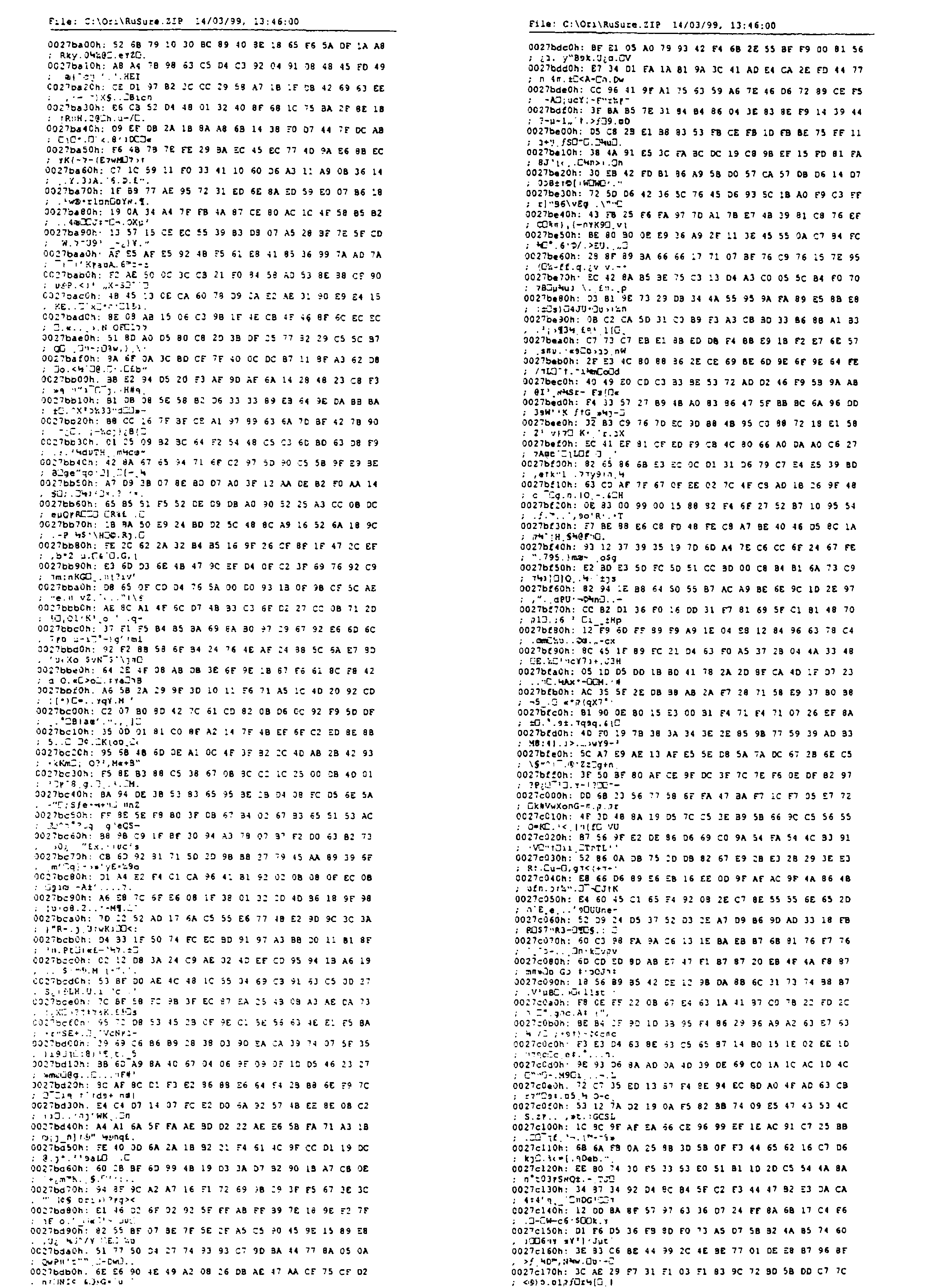

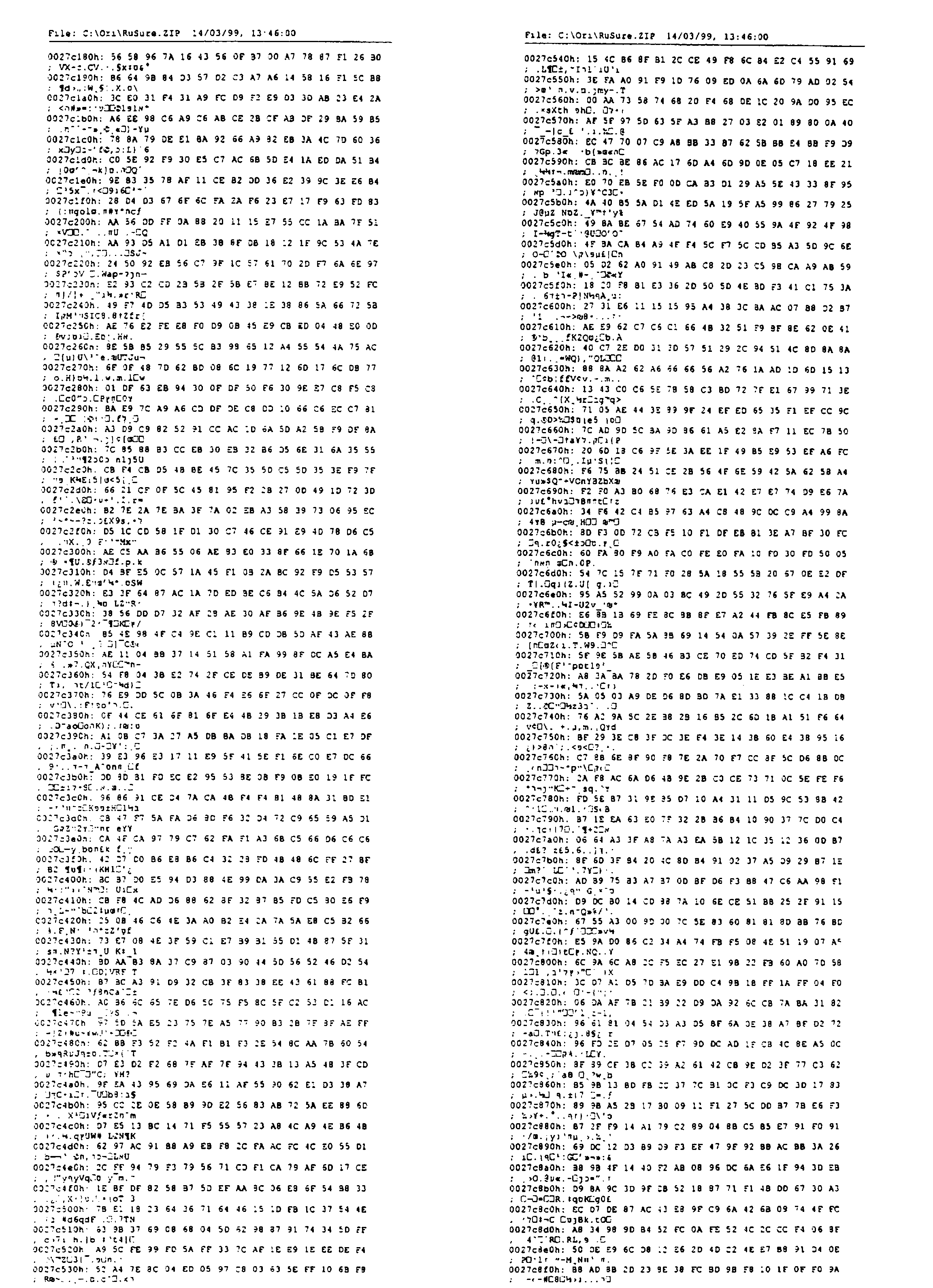

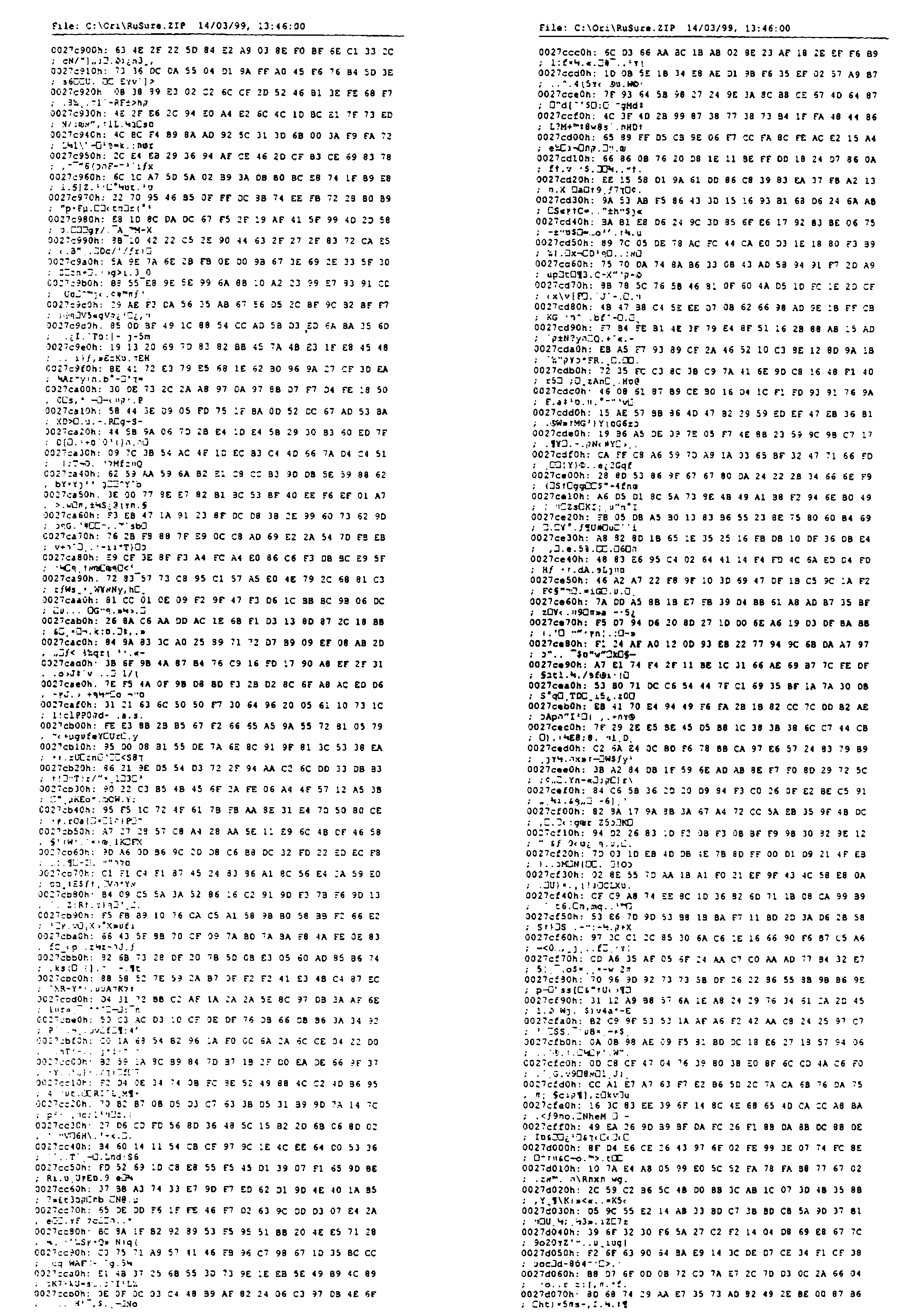

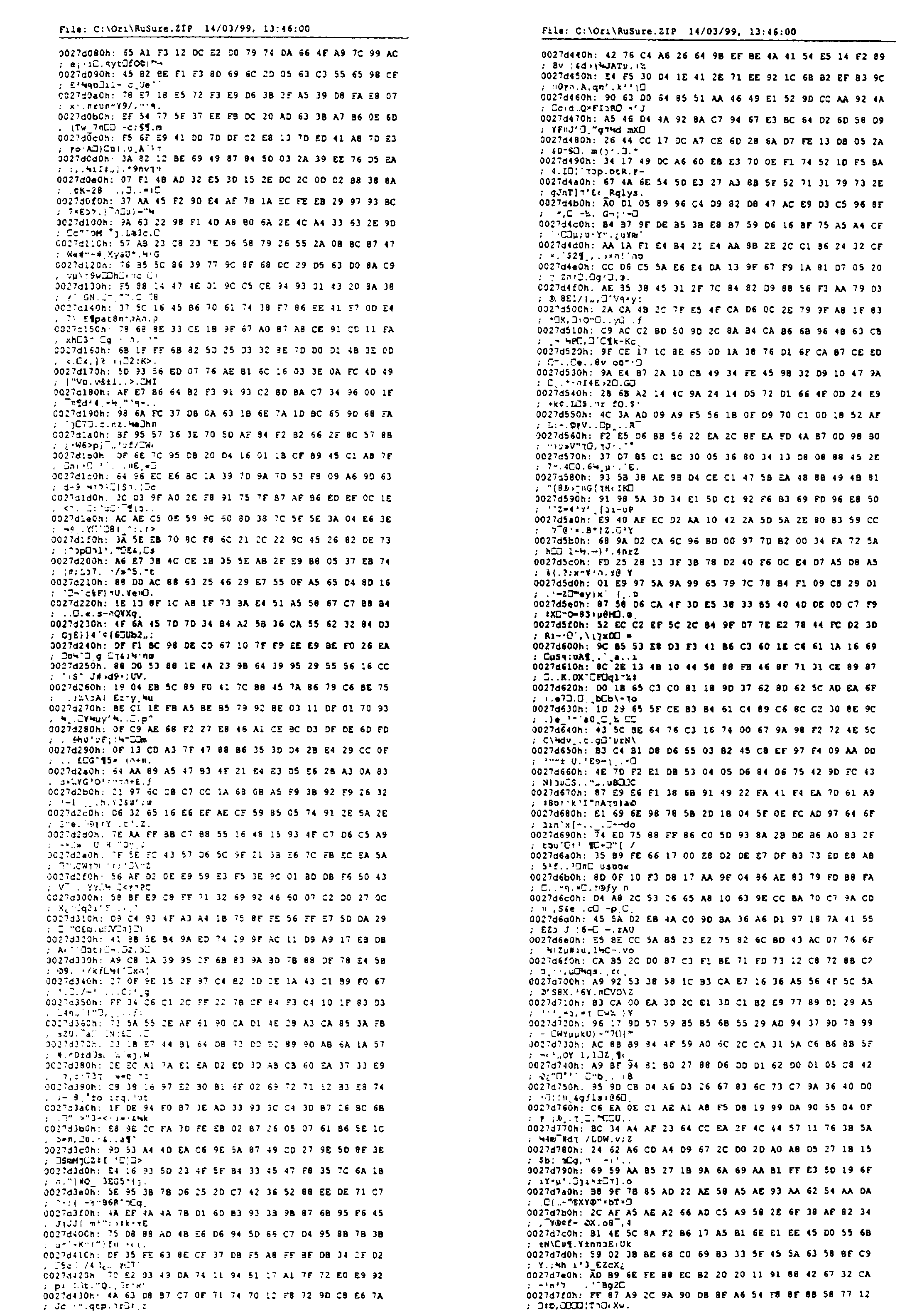

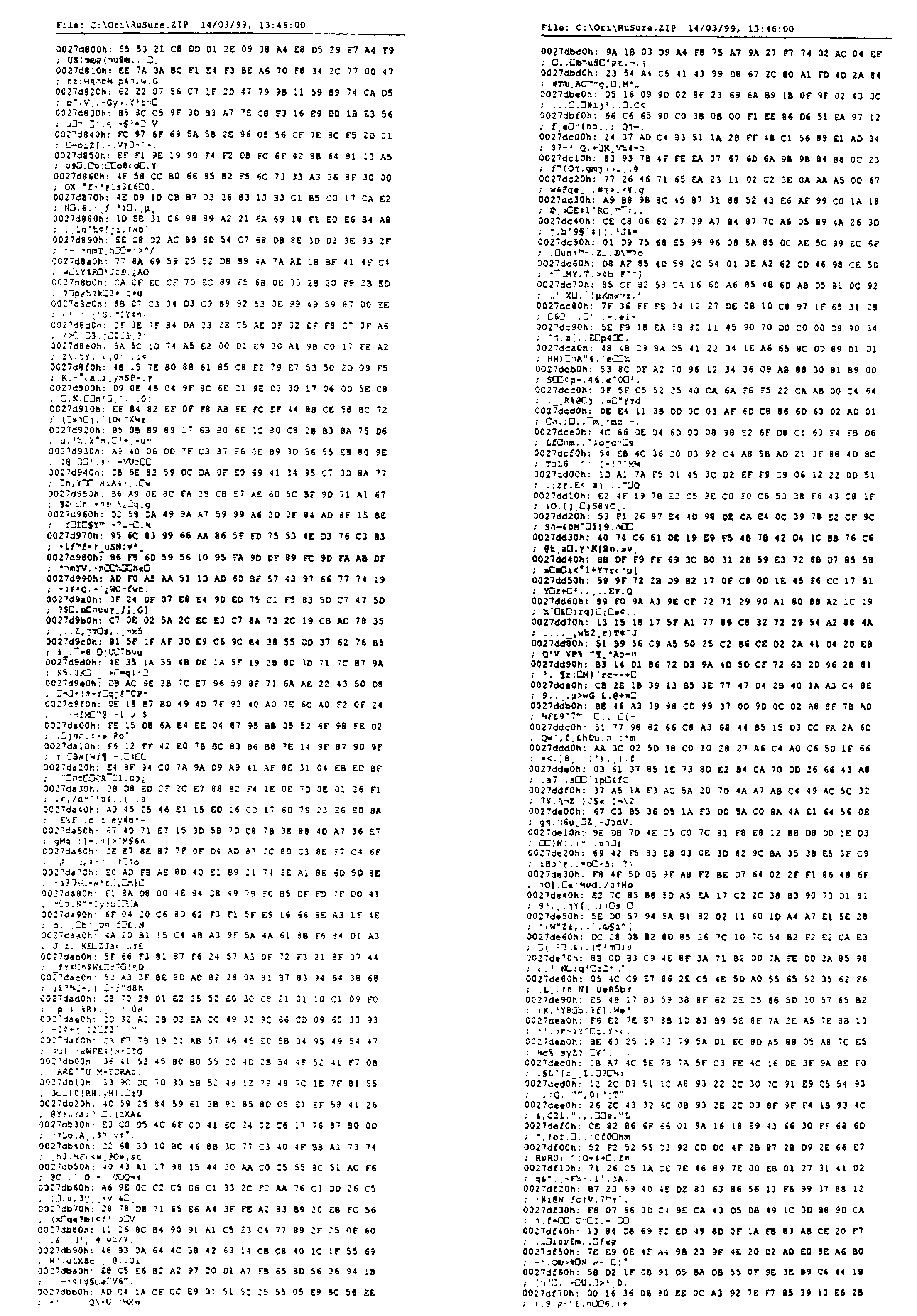

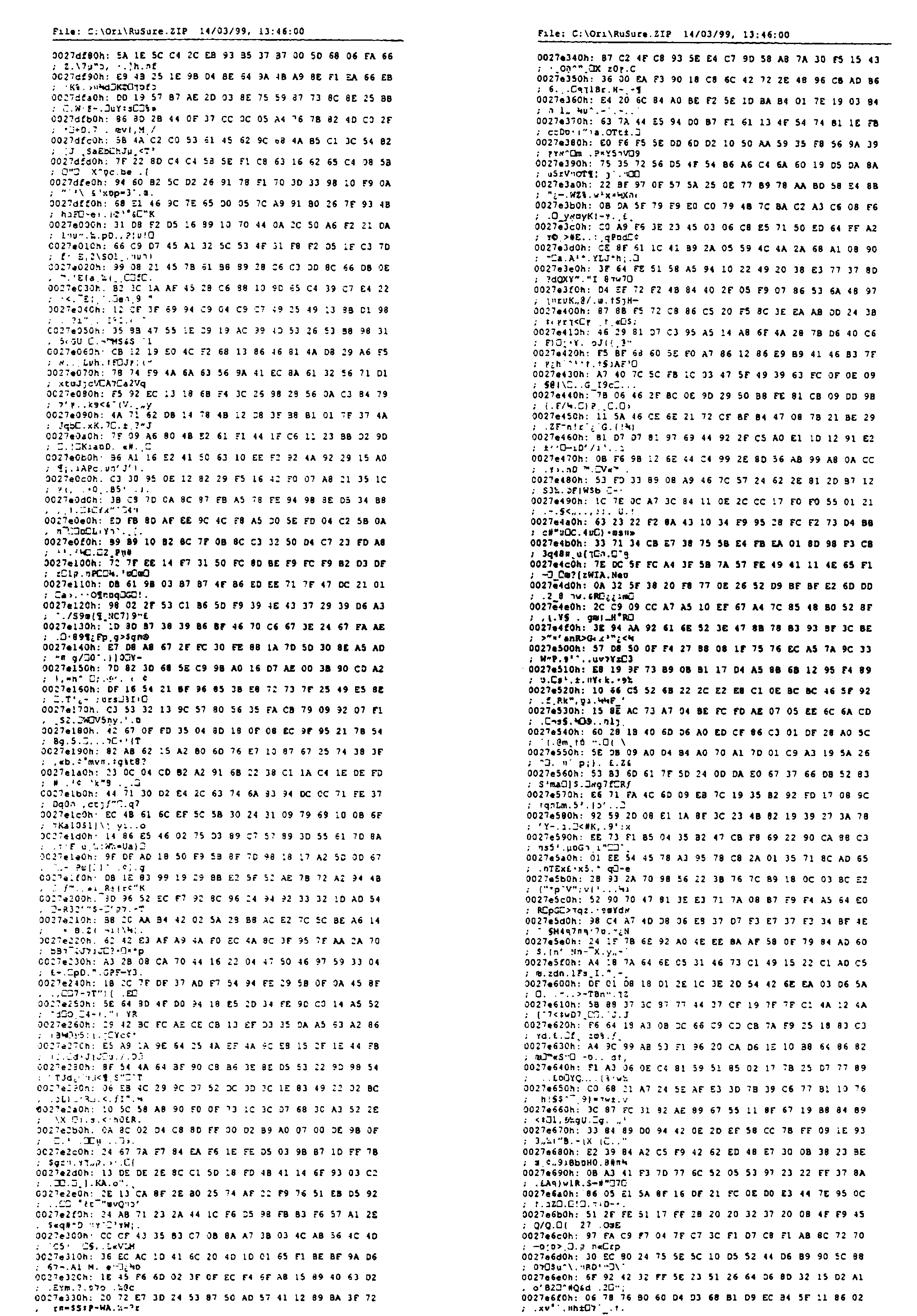

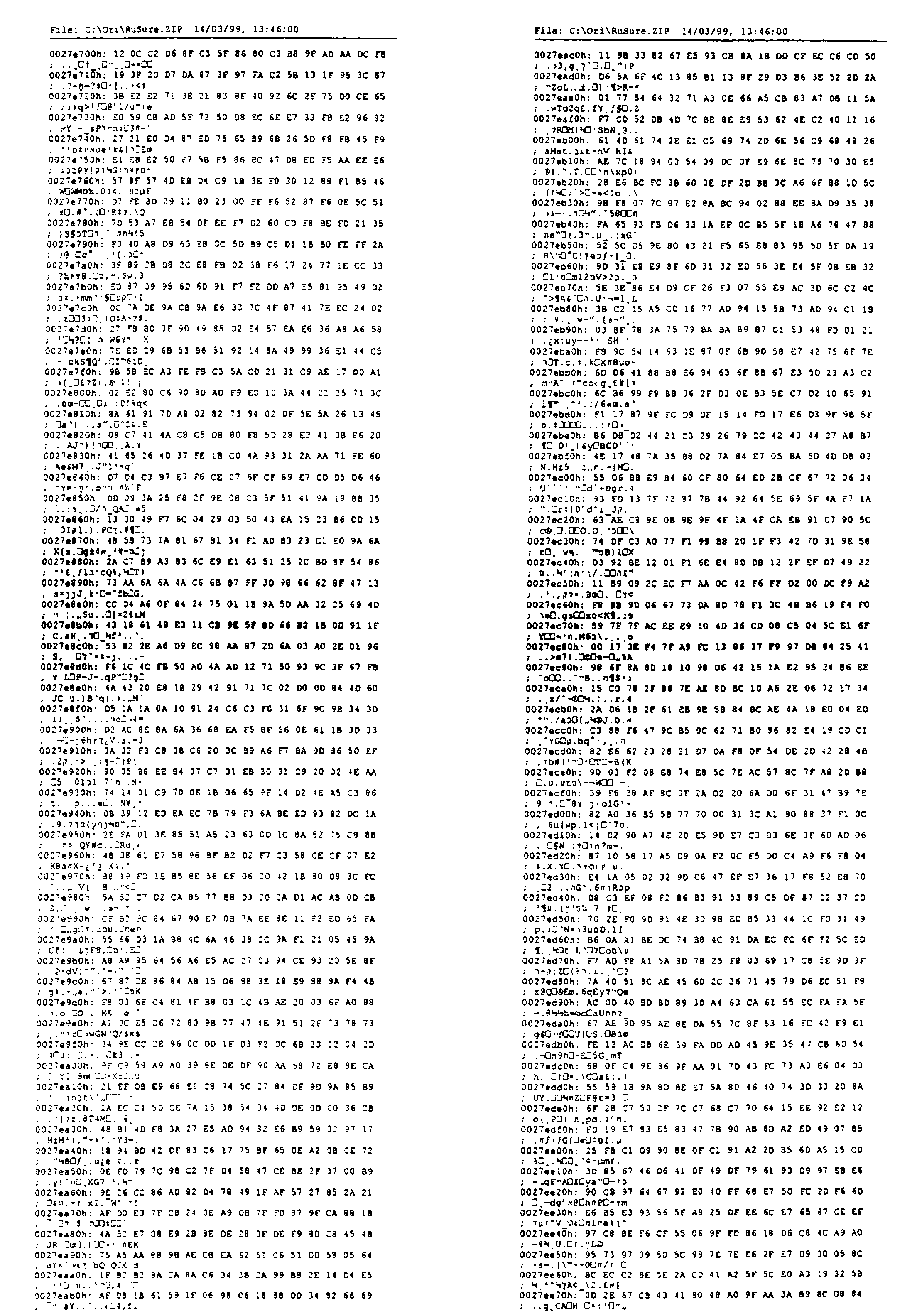

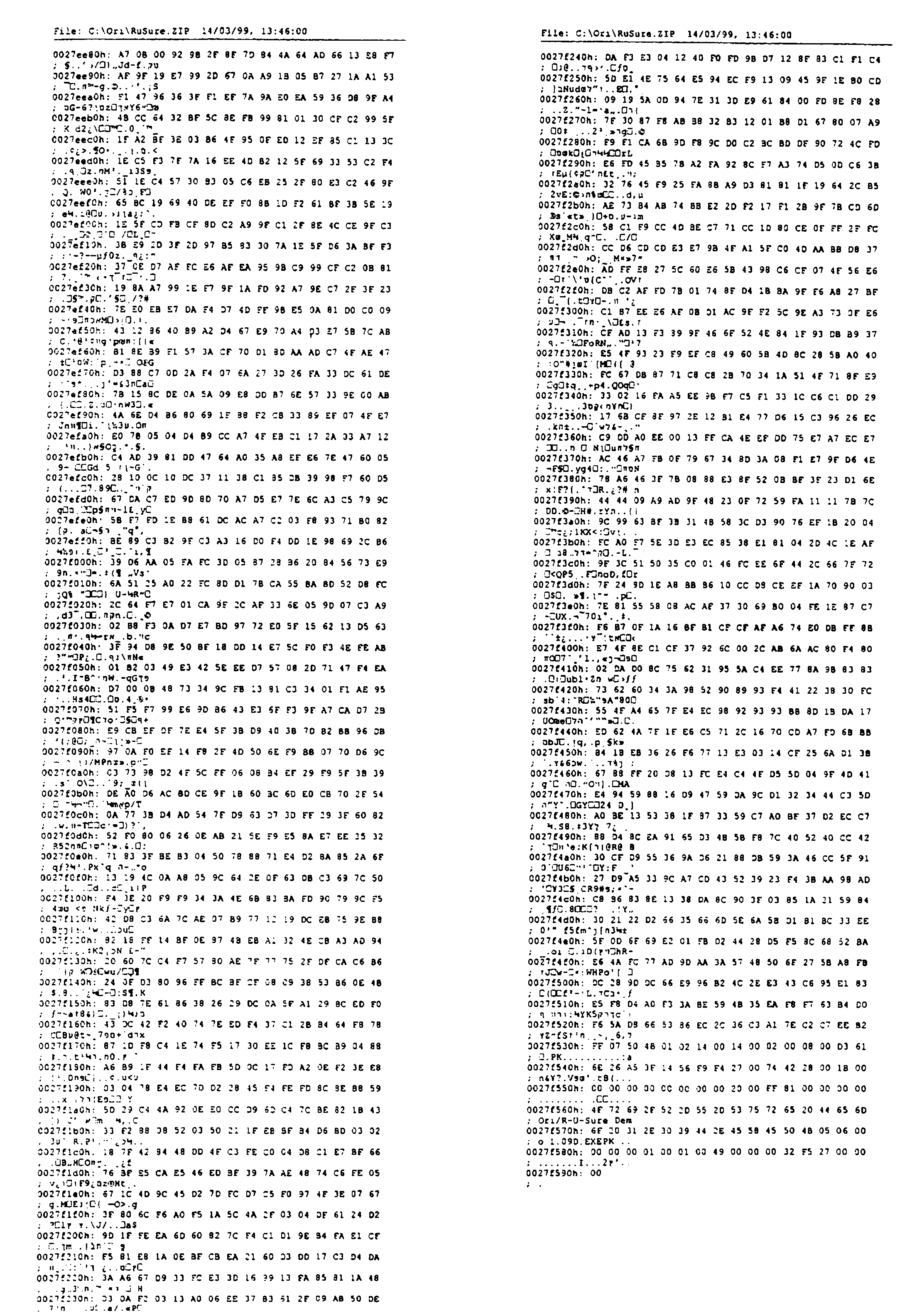

## Claims

1. A method for acquiring and providing e-commerce information, the method comprising:
(a) retrieving a first web page from a first web site;
(b) retrieving a first site profile preconfigured for said web site, said site profile indicating in said web page at least one data region adapted for placement therein of text or images indicating items for sale and web links associated with said items;
(c) identifying, using said site profile, a data region of said web page containing text or images indicating at least one item for sale and at least one web link associated with said item;
(d) acquiring information regarding said item from a source other than said web site; and
(e) providing said item information acquired in step (d).

2. A method according to claim 1 wherein said acquiring step (d) comprises acquiring in response to said item being selected.

3. A method according to claim 1 wherein said acquiring step (d) comprises acquiring in response to said web link being selected.

4. A method according to claim 1 wherein said source is a search engine and wherein said acquiring step (d) comprises:
(f) querying said search engine for said item information; and
(g) parsing a response from said search engine using a second site profile preconfigured for said search engine to determine said item information.

5. A method according to claim 1 wherein said acquiring step (d) comprises:
maintaining said item in at least one watch list; and periodically acquiring said item information.

6. A method according to claim 1 said acquiring step (d) comprises:
(f) querying said search engine for said item information; and
(g) parsing a response from said search engine using a second site profile 1 wherein said acquiring step (d) comprises:
maintaining said item in at least one watch list; and acquiring said item information upon the detection of a change in said item information.

7. A method according to claim 6 wherein said change is any of the price of said item, the creation of a new review of said item, and a change in inventory information.

8. A method according to claim 1 wherein said acquiring step (d) comprises:
maintaining said item in at least one watch list; and indicating to a user how many watch lists currently include said item.

9. A method according to claim 1 wherein said acquiring step (d) comprises:
maintaining said item in at least one watch list; and indicating to a user how many watch lists previously included said item.

10. A method according to claim 1 wherein said acquiring step (d) comprises indicating to a user how many times said item has previously been searched.

11. A method according to claim 1 wherein said providing step (e) comprises providing said item information on a computer display.

12. A method according to claim 1 wherein:
said identifying step (c) comprises identifying a plurality of said items for sale;
said acquiring step (d) comprises acquiring information regarding said plurality of items from a source other than said web site; and
said providing step (e) comprises providing said item information regarding said plurality of items in accordance with predetermined criteria.

13. A method for acquiring and providing information, the method comprising:
(a) retrieving a web page;
(b) viewing the web page;
(c) concurrently with viewing the web page parsing the text content of the web page; and
(d) in response to at least one user input, providing additional information to the user from web pages other than said web page by at least partially utilizing information derived from parsing the text content of the web page.

14. A genie for use in acquiring and providing information, the genie being operative in cooperation with a web browser on a client and having the following functionalities:
(a) analyzing non-URL content of a web page concurrently with user viewing of the web page; and
(d) providing additional information to the user from web pages other than said web page by at least partially utilizing information derived from analyzing the non-URL content of the web page.
